(19) Europäisches Patentamt
European Patent Office
Office européen des brevets

(11) **EP 4 442 787 A1**

(12) **EUROPEAN PATENT APPLICATION**
published in accordance with Art. 153(4) EPC

(43) Date of publication:
**09.10.2024 Bulletin 2024/41**

(21) Application number: **22901179.6**

(22) Date of filing: **24.11.2022**

(51) International Patent Classification (IPC):
*C09K 5/04* (2006.01)

(52) Cooperative Patent Classification (CPC):
**C09K 5/04**

(86) International application number:
**PCT/JP2022/043431**

(87) International publication number:
**WO 2023/100746 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 JP 2021197399**
**15.04.2022 JP 2022067936**
**07.10.2022 JP 2022162767**

(71) Applicant: **AGC INC.**
**Chiyoda-ku,**
**Tokyo 1008405 (JP)**

(72) Inventors:
• **HAYAMIZU, Hiroki**
**Tokyo 100-8405 (JP)**
• **FUKUSHIMA, Masato**
**Tokyo 100-8405 (JP)**
• **OKAMOTO, Hidekazu**
**Tokyo 100-8405 (JP)**

(74) Representative: **Müller-Boré & Partner**
**Patentanwälte PartG mbB**
**Friedenheimer Brücke 21**
**80639 München (DE)**

(54) **WORKING MEDIUM**

(57)     A working medium contains propane, at least one of 1,1,2-trifluoroethylene or (E)-1,2-difluoroethylene, and at least one selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene, in which a combustion heat amount is less than 19.000 MJ/kg.

FIG.1

EP 4 442 787 A1

**Description**

Technical Field

The present disclosure relates to a working medium.

Background Art

Heretofore, as a working medium for a heat cycle system such as a refrigerant for a refrigerator, a refrigerant for an air-conditioning apparatus, a working medium for a power generation system (such as exhaust heat recovery power generation), a working medium for a latent heat transport apparatus (such as a heat pipe), or a secondary cooling fluid, a chlorofluorocarbon (CFC) such as chlorotrifluoromethane or dichlorodifluoromethane, or a hydrochlorofluorocarbon (HCFC) such as chlorodifluoromethane has been used. However, influences of CFC and HCFC over the ozone layer in the stratosphere have been pointed out, and their use is regulated at present.

Under the above conditions, as a working medium for a heat cycle system, a hydrofluorocarbon (HFC), which has less influence over the ozone layer, such as difluoromethane (HFC-32), tetrafluoroethane, or pentafluoroethane (HFC-125) has been used, instead of CFC and HCFC. For example, R410A(a pseudo azeotropic mixture refrigerant of HFC-32 and HFC-125 in a mass ratio of 1 : 1) or the like is a refrigerant which has been widely used. However, it is pointed out that HFC may cause global warming.

R410A has been widely used for a common air-conditioning apparatus such as a socalled package air-conditioner or room air-conditioner, due to its high refrigerating capacity. However, a global warming potential (GWP) of R410A is so high as 2088. Therefore, development of a refrigerant with low GWP has been desired. At this time, development of a refrigerant has been desired on the premise that R410A is simply replaced and existing apparatus will be used as it is.

In recent years, a hydrofluoroolefin (HFO) has been expected as a refrigerant having less influence over the ozone layer and having less influence over global warming. HFO is an HFC having a carbon-carbon double bond, and the carbon-carbon double bond is likely to be decomposed by OH radicals in the air. In the disclosure, unless otherwise specified, saturated HFC will be referred to as an HFC and distinguished from an HFO.

As a refrigerant using a HFO, for example, WO 2012/157764 A discloses a technique relating to a refrigerant using 1,1,2-trifluoroethylene (HFO-1123) which has the above properties and with which excellent cycle performance is obtained.

For example, Japanese Patent Application Laid-Open (JP-A) No. 2021-167428 also discloses a technique relating to a refrigerant using (E)-1,2-difluoroethylene (HFO-1132(E)) which has the above properties and with which excellent cycle performance is obtained.

For HFO-1123 and HFO-1132(E), for the purpose of increasing the cycle performance or the like of these components, it is effective to use a working medium in which other media such as an HFC and an HFO are combined.

SUMMARY OF INVENTION

Technical Problem

As an example of the other media, propane having a low GWP and excellent performance as a refrigerant can be exemplified as an effective medium. Therefore, development of a working medium containing propane is desired.

An aspect of the disclosure has been made in view of the above conventional circumstances, and an object thereof is to provide a working medium containing propane and having excellent performance as a refrigerant.

Solution to Problem

Specific means for attaining the above object are as follows.

<1> A working medium containing:

propane;
at least one of 1,1,2-trifluoroethylene or (E)-1,2-difluoroethylene; and
at least one third component selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene,
in which a combustion heat amount is less than 19.000 MJ/kg.

<2> The working medium according to <1>, in which the working medium contains the propane, the 1,1,2-trifluoroethylene, and the 2,3,3,3-tetrafluoro-1-propene,

a mass ratio of a content of the propane and a content of the 1,1,2-trifluoroethylene is from 5 : 95 to 29 : 71,
a content of the 2,3,3,3-tetrafluoro-1-propene is from 10.5% by mass to 25.0% by mass with respect to a total content of the propane, the 1,1,2-trifluoroethylene, and the 2,3,3,3-tetrafluoro-1-propene, and
the total content of the propane, the 1,1,2-trifluoroethylene, and the 2,3,3,3-tetrafluoro-1-propene is 80% by mass or more with respect to a total amount of the working medium.

<3> The working medium according to <1>, in which the working medium contains the propane, the 1,1,2-trifluoroethylene, and the difluoromethane,

a mass ratio of a content of the propane and a content of the 1,1,2-trifluoroethylene is from 18 : 82 to 22 : 78, and
a content of the difluoromethane is from 5.5% by mass to 19.5% by mass with respect to a total content of the propane, the 1,1,2-trifluoroethylene, and the difluoromethane.

<4> The working medium according to <1>, in which the working medium contains the propane, the 1,1,2-trifluoroethylene, and the difluoromethane,

a mass ratio of a content of the propane and a content of the 1,1,2-trifluoroethylene is from 5 : 95 to 23 : 77, and
a content of the difluoromethane is from 20.1% by mass to 21.9% by mass with respect to a total content of the propane, the 1,1,2-trifluoroethylene, and the difluoromethane.

<5> The working medium according to <1>, in which the working medium contains the propane, the 1,1,2-trifluoroethylene, and the difluoromethane,

a mass ratio of a content of the propane and a content of the 1,1,2-trifluoroethylene is from 18.9 : 81.1 to 23 : 77, and
a content of the difluoromethane is from 12.5% by mass to 21.5% by mass with respect to a total content of the propane, the 1,1,2-trifluoroethylene, and the difluoromethane.

<6> The working medium according to <1>, in which the working medium contains the propane, the 1,1,2-trifluoroethylene, and the (E)-1,3,3,3-tetrafluoropropene,

a content of the propane is 25.0% by mass or less with respect to a total content of the propane and the 1,1,2-trifluoroethylene,
a content of the (E)-1,3,3,3-tetrafluoropropene is from 11.0% by mass to 25.0% by mass with respect to a total content of the propane, the 1,1,2-trifluoroethylene, and the (E)-1,3,3,3-tetrafluoropropene, and
the total content is 78.5% by mass or more with respect to a total amount of the working medium.

<7> The working medium according to <1>, in which the working medium contains the propane, the 1,1,2-trifluoroethylene, and the (E)-1,3,3,3-tetrafluoropropene,

a content of the propane is 10% by mass or less with respect to a total content of the propane and the 1,1,2-trifluoroethylene, and
a content of the (E)-1,3,3,3-tetrafluoropropene is 15.0% by mass or less with respect to a total content of the propane, the 1,1,2-trifluoroethylene, and the (E)-1,3,3,3-tetrafluoropropene.

<8> The working medium according to <1>, in which the working medium contains the propane, the 1,1,2-trifluoroethylene, and the (E)-1,3,3,3-tetrafluoropropene,

a content of the propane is 20.0% by mass or less with respect to a total content of the propane and the 1,1,2-trifluoroethylene, and
a content of the (E)-1,3,3,3-tetrafluoropropene is 9.0% by mass or less with respect to a total content of the propane, the 1,1,2-trifluoroethylene, and the (E)-1,3,3,3-tetrafluoropropene.

<9> The working medium according to <1>, in which the working medium contains the propane, the 1,1,2-trifluoroethylene, and the $CO_2$,

in a case in which a content of the 1,1,2-trifluoroethylene with respect to a total content of the propane, and the 1,1,2-trifluoroethylene, and the $CO_2$ is designated as $X_i$% by mass, and a content of the $CO_2$ with the total content is designated as $Y_1$% by mass, the $X_1$ and the $Y_1$ satisfy the following Formula (1), and the total content is 78.5% by mass or more with respect to a total amount of the working medium:

$$-0.00115X_1{}^3 + 0.13537X_1{}^2 - 6.20662X_1 + 151.14664 \leq Y_1 \leq 59 ...(1)$$

<10> The working medium according to <9>, in which the content of the $CO_2$ is 20.0% by mass or less with respect to the total content.

<11> The working medium according to <1>, in which the working medium contains the propane, the 1,1,2-trifluoroethylene, and the $CF_3I$,

in a case in which a content of the propane with respect to a total content of the propane, and the 1,1,2-trifluoroethylene, and the $CF_3I$ is designated as $X_2$% by mass, and a content of the $CF_3I$ with the total content is designated as $Y_2$% by mass, the $X_2$ and the $Y_2$ satisfy the following Formula (2A), and the total content is 78.5% by mass or more with respect to a total amount of the working medium:

$$Y_2 \leq -1.125X_2 + 39 ...(2A)$$

<12> The working medium according to <11>, in which the $X_2$ and the $Y_2$ further satisfy the following Formula (2B):

$$Y_2 \leq 0.05994X_2{}^2 + 0.23676X_2 + 11.85165 ...(2B)$$

<13> The working medium according to <1>, in which the working medium contains the propane, the (E)-1,2-difluoroethylene, and the third component, and the combustion heat amount is less than 15.250 MJ/kg.

<14> The working medium according to <1>, in which the working medium contains the propane, the (E)-1,2-difluoroethylene, and the third component, and a content of the propane is 10.0% by mass or less with respect to a total content of the propane and the (E)-1,2-difluoroethylene.

<15> The working medium according to <1>, in which the working medium contains the propane, the 1,1,2-trifluoroethylene, the 2,3,3,3-tetrafluoro-1-propene, and the difluoromethane, and

in a case in which a content of the difluoromethane with respect to a total content of the propane, the 1,1,2-trifluoroethylene, the 2,3,3,3-tetrafluoro-1-propene, and the difluoromethane is designated as A% by mass, a content of the 2,3,3,3-tetrafluoro-1-propene with respect to the total content is designated as B% by mass, a content of the propane with respect to the total content is designated as C% by mass, and a content of the 1,1,2-trifluoroethylene with respect to the total content is designated as D% by mass, the A, the B, the C, and the D satisfy the following Formulas (3A) to (3D):

$$19 \leq A \leq 22 ...(3A)$$

$$0.1562A^2 - 5.88147A + 56.79 \leq B \leq -0.1444A^2 + 4.9917A - 0.9609 ...(3B)$$

$$3 \leq C \leq -0.0168B + 0.032A + 23.365 ...(3C)$$

$$(0.0006A^2 + 0.0103A - 2.6844)C + (0.1143A^2 - 5.4982A + 133.96) \leq D \leq (0.00025A + 0.0213)C^2 + (-0.0003A^2 - 0.0055A - 1.1287)C + (-1.0639A + 92.613) \quad (3D)$$

<16> The working medium according to <1>, in which the working medium contains the propane, the 1,1,2-trifluoroethylene, the (E)-1,3,3,3-tetrafluoropropene, and the difluoromethane, and

in a case in which a content of the difluoromethane with respect to a total content of the propane, the 1,1,2-trifluoroethylene, the (E)-1,3,3,3-tetrafluoropropene, and the difluoromethane is designated as E% by mass, a content of the (E)-1,3,3,3-tetrafluoropropene with respect to the total content is designated as F% by mass, a content of the propane with respect to the total content is designated as G% by mass, and a content of the 1,1,2-trifluoroethylene with respect to the total content is designated as H% by mass, the E, the F, the G, and the H satisfy the following Formulas (4A) to (4D):

$$19 \leq E \leq 22...(4A)$$

$$-0.0577E^2 + 2.595E - 25.794 \leq F \leq -0.453E + 43.836...(4B)$$

$$2 \leq G \leq 0.030E + 23.40...(4C)$$

$$(0.0053E^2 - 0.1950E - 0.0880)G + (-0.0044E^2 - 0.6605E + 83.7959) \leq H \leq 0.0255G^2 + (-0.0042E^2 + 0.1577E - 2.8414)G + (-1.059E + 91.6916) \quad (4D)$$

<17> The working medium according to <1>, in which the working medium contains the propane, the 1,1,2-trifluoroethylene, the $CO_2$, and the difluoromethane, and
in a case in which a content of the difluoromethane with respect to a total content of the propane, the 1,1,2-trifluoroethylene, the $CO_2$, and the difluoromethane is designated as J% by mass, a content of the $CO_2$ with respect to the total content is designated as K% by mass, a content of the propane with respect to the total content is designated as L% by mass, and a content of the 1,1,2-trifluoroethylene with respect to the total content is designated as M% by mass, the J, the K, the L, and the M satisfy the following Formulas (5A) to (5D):

$$19 \leq J \leq 22...(5A)$$

$$0.074J^2 - 3.2047J - 37.862 \leq K \leq 0.055J^2 - 2.2893J + 42.055...(5B)$$

$$1 \leq L \leq 0.2985K + 23.9...(5C)$$

$$(-0.00015J^2 + 0.0055J - 0.0637)L^2 + (0.0031J^2 - 0.1025J - 0.0673)L + (-0.0017J^2 - 1.0368J + 91.439) \leq M \leq (-0.000054J^2 + 0.00165J - 0.00500)L^2 + (0.0029J^2 - 0.1040J - 0.1186)L + (-0.1221J^2 + 4.1517J + 39.5) \quad (5D)$$

<18> The working medium according to <1>, in which the working medium contains the propane, the 1,1,2-trifluoroethylene, the $CF_3I$, and the difluoromethane.
<19> The working medium according to <1>, in which the working medium contains the propane, the 1,1,2-trifluoroethylene, and the 2,3,3,3-tetrafluoro-1-propene,

a content of the 2,3,3,3-tetrafluoro-1-propene is from 25.0% by mass to 70.0% by mass with respect to a total content of the propane, the 1,1,2-trifluoroethylene, and the 2,3,3,3-tetrafluoro-1-propene,
a content of the propane is 9.0% by mass or less with respect to the total content, and
the total content is 78.5% by mass or more with respect to a total amount of the working medium.

Advantageous Effects of Invention

According to one aspect of the disclosure, there is provided a working medium containing propane and having excellent performance as a refrigerant.

BRIEF DESCRIPTION OF DRAWINGS

Fig. 1 is a triangular diagram of a three-component system of propane, HFO-1123, and HFO-1234yf.
Fig. 2 shows a triangular diagram of a three-component system of propane, HFO-1123, and HFO-1234ze(E).
Fig. 3 is a triangular diagram of a three-component system of propane, HFO-1123, and HFC-32.
Fig. 4 is a triangular diagram of a three-component system of propane, HFO-1123, and $CO_2$.
Fig. 5 is a triangular diagram of a three-component system of propane, HFO-1123, and $CF_3I$.
Fig. 6 is a triangular diagram of a three-component system of propane, HFO-1123, and HFO-1132(E).
Fig. 7 is a triangular diagram of a three-component system of propane, HFO-1132(E), and HFO-1234yf.
Fig. 8 is a triangular diagram of a three-component system of propane, HFO-1132(E), and HFO-1234ze(E).
Fig. 9 is a triangular diagram of a three-component system of propane, HFO-1132(E), and HFC-32.
Fig. 10 is a triangular diagram of a three-component system of propane, HFO-1132(E), and $CO_2$.
Fig. 11 is a triangular diagram of a three-component system of propane, HFO-1132(E), and $CF_3I$.
Fig. 12 is a schematic configuration diagram illustrating an example of a refrigerating cycle system.
Fig. 13 is a cycle diagram illustrating a state change of a working medium in a refrigerating cycle system on a pressure-enthalpy chart.
Fig. 14 is a cycle diagram illustrating a state change of a working medium in a refrigerating cycle system on a temperature-entropy chart.

DESCRIPTION OF EMBODIMENTS

Hereinafter, embodiments of the disclosure will be described in detail. However, the disclosure is not limited to the following embodiments. In the following embodiments, constituent elements (including elemental steps and the like) are not necessarily indispensable unless otherwise stated. The same applies to numerical values and ranges thereof, and does not limit the disclosure.

In the disclosure, a numerical range that has been indicated by use of "to" indicates the range that includes the numerical values which are described before and after "to", as a minimum value and a maximum value, respectively.

In a numerical range described in a stepwise manner in the disclosure, an upper limit value or a lower limit value described in one numerical range may be replaced with an upper limit value or a lower limit value described in another numerical range described in a stepwise manner. In a numerical range described in the disclosure, an upper limit value or a lower limit value described in one numerical range may be replaced with a value shown in Examples.

In a case in which a plurality of substances corresponding to each component are present in a composition, the content of each component in the composition in the disclosure means the total content of the plurality of substances present in the composition unless otherwise specified.

In the disclosure, a combination of two or more preferred aspects is a more preferred aspect.

<Working Medium>

A working medium of the disclosure contains propane, at least one of HFO-1123 or HFO-1132(E), and at least one selected from the group consisting of 2,3,3,3-tetrafluoro-1-propene (HFO-1234yf), (E)-1,3,3,3-tetrafluoropropene (HFO-1234ze(E)), HFC-32, $CO_2$, $CF_3I$, (Z)-1-chloro-2,3,3,3-tetrafluoropropene (HCFO-1224yd(Z)), (E)-1-chloro-2,3,3,3-tetrafluoropropene (HCFO-1224yd(E)), (E)-1-chloro-3,3,3-trifluoropropene (HFO-1233zd(E)), (E)-1,1,1,4,4,4-hexafluoro-2-butene (HFO-1336mzz(E)), (Z)-1,2,3,3,3-pentafluoropropene (HFO-1225ye(Z)), and (E)-1,2,3,3,3-pentafluoropropene (HFO-1225ye(E)), in which a combustion heat amount is less than 19.000 MJ/kg.

In the disclosure, the working medium means a medium that transfers heat, and is a concept including a refrigerant composition and a heat medium composition. The refrigerant composition is a medium mainly responsible for cooling a heat source, but may be used as a medium responsible for heating at the same time. The heat medium composition is a medium mainly responsible for heating, but may be used as a medium responsible for cooling a heat source at the same time.

In the working medium of the disclosure, propane, at least one of HFO-1123 or HFO-1132(E), and at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E) are selectively combined, and then the combustion heat amount is set to less than 19.000 MJ/kg, so that propane can be beneficially used as a refrigerant. Hereinafter, the "at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E)" is also referred to as a third component.

From the viewpoint of easily azeotroping with HFO-1123 and HFO-1132(E), the boiling point of the third component is preferably 0°C or less, more preferably -5°C or less, still more preferably -10°C or less, and particularly preferably -15°C or less. The lower limit value of the boiling point is not particularly limited, and is, for example, -80°C.

From the viewpoint of the boiling point, the working medium of the disclosure more preferably contains propane, at least one of HFO-1123 or HFO-1132(E), and at least one selected from the group consisting of HFO-1234yf, HFO-1234ze(E), HFC-32, $CO_2$, and $CF_3I$.

From the viewpoint of forming an azeotropic mixture, the working medium of the disclosure still more preferably contains propane, at least one of HFO-1123 or HFO-1132(E), and at least one selected from the group consisting of HFO-1234yf, HFO-1234ze(E), and HFC-32.

The working medium of the disclosure preferably contains HFO-1123 since the working medium has characteristics of a low combustion rate and a small combustion heat amount. Since HFO-1123 has no isomer, an isomerization reaction does not occur during use of the working medium, and HFO-1123 is excellent in stability. That is, the working medium of the disclosure preferably contains propane, HFO-1123, and at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E).

The working medium of the disclosure more preferably contains propane, HFO-1123, and at least one selected from the group consisting of HFO-1234yf, HFO-1234ze(E), HFC-32, $CO_2$, and $CF_3I$.

The working medium of the disclosure still more preferably contains propane, HFO-1123, and at least one selected from the group consisting of HFO-1234yf, HFO-1234ze(E), and HFC-32.

The content of propane in the working medium of the disclosure is not particularly limited as long as the combustion heat amount as the entire working medium is within a range of less than 19.000 MJ/kg. From the viewpoint of improving the performance of the working medium as a refrigerant, the content of propane is preferably 1.0% by mass or more, more preferably 3.0% by mass or more, and still more preferably 5.0% by mass or more with respect to the total amount of the working medium. The content of propane may be 40.0% by mass or less with respect to the total amount of the working medium.

In particular, from the viewpoint of setting the combustion heat amount as the entire working medium to less than 19.000 MJ/kg, the content of propane is preferably from 1.0% by mass to 30.0% by mass, more preferably from 1.0% by mass to 25.0% by mass, and still more preferably from 1.0% by mass to 23.0% by mass with respect to the total amount of the working medium.

The content of at least one of HFO-1123 or HFO-1132(E) in the working medium of the disclosure is not particularly limited as long as the combustion heat amount as the entire working medium is within a range of less than 19.000 MJ/kg. From the viewpoint of improving the performance of the working medium as a refrigerant, the content of at least one of HFO-1123 or HFO-1132(E) is preferably 20.0% by mass or more, more preferably 30.0% by mass or more, still more preferably 40.0% by mass or more, particularly preferably 50.0% by mass or more, and most preferably 55.0% by mass or more with respect to the total amount of the working medium. The content of at least one of HFO-1123 or HFO-1132(E) may be 90.0% by mass or less or 85% by mass or less with respect to the total amount of the working medium.

The content of at least one of HFO-1123 or HFO-1132(E) means the content of one component in a case in which the working medium contains HFO-1123 or HFO-1132(E), and means the total content of the respective components in a case in which the working medium contains HFO-1123 and HFO-1132(E).

In the working medium of the disclosure, the third component may be used singly, or in combination of two or more kinds thereof.

The content of the main component in the third component in the working medium of the disclosure is not particularly limited as long as the combustion heat amount as the entire working medium is within a range of less than 19.000 MJ/kg. From the viewpoint of improving the performance of the working medium as a refrigerant, the content of the main component in the third component is preferably 1.0% by mass or more, more preferably 5.0% by mass or more, and still more preferably 10.0% by mass or more with respect to the total amount of the working medium. From the viewpoint of improving the performance of the working medium as a refrigerant, the content of the main component in the third component is preferably 35.0% by mass or less, more preferably 30.0% by mass or less, and still more preferably 25.0% by mass or more with respect to the total amount of the working medium.

In a case in which the working medium contains only one component as the third component, the main component in the third component is this component, and in a case in which the working medium contains a plurality of components as the third component, the main component in the third component means the component having the largest content in the third component.

In the working medium of the disclosure, the total content of propane, at least one of HFO-1123 or HFO-1132(E), and the main component in the third component is preferably 80% by mass or more and more preferably 85% by mass or more with respect to the total amount of the working medium, from the viewpoint of decreasing GWP. The upper limit value of the total content is not particularly limited, and may be 100% by mass. The total content may be less than 95% by mass or less than 90% by mass with respect to the total amount of the working medium. That is, the working medium of the disclosure may contain propane, at least one of HFO-1123 or HFO-1132(E), and a component other than the third component, and the third component may be plural.

In a case in which the working medium of the disclosure contains HFC-32, from the viewpoint of setting GWP as the entire working medium to 150 or less, the content of HFC-32 may be 22.0% by mass or less, 19.0% by mass or less, or 15.0% by mass or less with respect to the total amount of the working medium. The content of HFC-32 may be 1.0% by mass or more with respect to the total amount of the working medium.

In a case in which the working medium of the disclosure contains $CO_2$, from the viewpoint of pressure, the content of $CO_2$ may be 15.0% by mass or less, 10.0% by mass or less, or 8.0% by mass or less with respect to the total amount of the working medium. The content of $CO_2$ may be 1.0% by mass or more with respect to the total amount of the working medium.

In a case in which the working medium of the disclosure contains HFO-1234yf, the viewpoint of reducing the temperature glide and the pressure loss, the content of HFO-1234yf is preferably 30.0% by mass or less and more preferably 25.0% by mass or less with respect to the total amount of the working medium. From the viewpoint of decreasing the condensing pressure, the content of HFO-1234yf is preferably 10.5% by mass or more and more preferably 15.0% by mass or more with respect to the total amount of the working medium.

In a case in which the working medium of the disclosure contains HCFO-1224yd(Z), HCFO-1224yd(E), HFO-1233zd(E), HFO-1336mzz(E), HFO-1225ye(Z), or HFO-1225ye(E), the content of each component may be 15.0% by mass or less, 10.0% by mass or less, or 5.0% by mass or less with respect to the total amount of the working medium. The content of each component may be 1.0% by mass or more with respect to the total amount of the working medium.

The combustion heat amount per mass (MJ/kg) is defined as an index for determining the flammability of a refrigerant by the American Society of Heating, Refrigeration and Air-conditioning Engineers (ASHRAE) Standard 34. In this standard, a substance having a calorific value of 19.000 MJ/kg or more is defined as one of indices of a refrigerant having "strong flame retardancy".

The combustion heat amount is represented by a difference between the sum of the formation enthalpies of products of a production system and the formation enthalpy of a compound of a reaction system in a combustion reaction formula.

The formation enthalpy is described in a chemical handbook, an international standard (see Reference Literature A), various handbooks, and the like.

The formation enthalpy for a novel compound can be determined by Benson's group additivity rule (see Reference Literature B) or a computational chemical method.

The concept of the combustion reaction formula of a compound containing a halogen is defined in the international standard (see Reference Literatures A and C).

Reference Literature A: ANSI/ASHRAE Standard 34 (2016), Designation and Safety Classification of Refrigerants.

Reference Literature B: S. Benson, Thermo chemical kinetics, 2nd Ed., Wiley Interscience, New York (1976).

Reference Literature C: ISO 817 (2014), Refrigerant:Designation and Safety Classification.

In this standard, the heat of combustion is positive for the exothermic reaction.

In the disclosure, the combustion heat amount of the working medium is a theoretical value calculated under the following assumption, where the value of the combustion heat amount obtained by stoichiometrically completely combusting 1 mol of the working medium with oxygen is converted into a value of combustion heat amount per 1 kg of the working medium.

It is assumed that the compounds in the production system and the reaction system are gases.

The combustion products are HF (g), $CO_2$ (g), $COF_2$ (g), and $H_2O$ (g). In a case in which nitrogen or iodine is a part of the molecular structure of the substance, $N_2$ (g) or $I_2$ (g) is added as a combustion product.

In a case in which the combustion heat amount of the working medium is determined, each compound contained in the working medium is decomposed into atoms constituting each compound, and an imaginary substance containing each atom is set in consideration of the molar ratio in the working medium. The combustion heat amount is calculated using the combustion reaction formula of the imaginary substance. $C_qH_rF_s$ in the following formula corresponds to the imaginary substance.

For example, the combustion reaction formula is defined by the magnitude of the H atom number (r) and the F atom number (s) in the substance, and the following formula is used as the combustion reaction formula in the case of H atom number (r) $\geq$ F atom number (s).

[Mathematical Formula 1]

$$C_qH_rF_s + \left(q + \frac{r-s}{4}\right)O_2 = sHF + qCO_2 + \frac{r-s}{2}H_2O \qquad (r \geq s)$$

As the combustion reaction formula in the case of H atom number (r) < F atom number (s), the following formula is used.

[Mathematical Formula 2]

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

Hereinafter, preferred aspects of the working medium of the disclosure will be described. In the following first to sixteenth aspects, since the content of each component contained in the working medium is within a specific range, the combustion heat amount is low, and heat cycle performance is excellent.

In a case in which HFO-1123 or HFO-1132(E) is combined with propane, the evaporation latent heat tends to increase, and the pressure loss is reduced as compared with the case of using HFO-1123 or HFO-1132(E) alone. By combining propane, at least one of HFO-1123 or HFO-1132(E), and further, the third component, cycle performance such as discharge temperature, condensing pressure, CAP, or temperature glide is also improved.

(First Aspect)

From the viewpoint of improving the performance of the working medium as a refrigerant, it is preferable that a first aspect of the working medium of the disclosure contains propane, HFO-1123, and HFO-1234yf, in which a mass ratio (propane : HFO-1123) of a content of propane and a content of HFO-1123 is from 5 : 95 to 29 : 71, a content of HFO-1234yf is from 10.5% by mass to 25.0% by mass with respect to a total content of propane, HFO-1123, and HFO-1234yf, and the total content of propane, HFO-1123, and HFO-1234yf is 80% by mass or more with respect to a total amount of the working medium.

In the first aspect, in a case in which the proportion of the content of propane in the total content of propane and HFO-1123 is 5% by mass or more, the condensing pressure decreases. On the other hand, in a case in which the proportion of the content of propane in the total content of propane and HFO-1123 is 29% by mass or less, the combustion heat amount decreases.

From the viewpoint of improving the performance of the working medium as a refrigerant, the mass ratio of the content of propane and the content of HFO-1123 is preferably from 10 : 90 to 29 : 71, more preferably from 15 : 85 to 29 : 71, still more preferably from 20 : 80 to 29 : 71, particularly preferably from 22 : 78 to 29 : 71, and extremely preferably from 22 : 78 to 27 : 73.

In the first aspect, in a case in which the content of HFO-1234yf is 10.5% by mass or more with respect to the total content of propane, HFO-1123, and HFO-1234yf, the combustion heat amount and the condensing pressure decrease. On the other hand, in a case in which the content of HFO-1234yf is 25.0% by mass or less with respect to the total content of propane, HFO-1123, and HFO-1234yf, the temperature glide and the pressure loss are reduced.

From the viewpoint of further decreasing the combustion heat amount and the condensing pressure, the content of HFO-1234yf is preferably 12% by mass or more and more preferably 15% by mass or more with respect to the total content of propane, HFO-1123, and HFO-1234yf.

In the first aspect, in a case in which the total content of propane, HFO-1123, and HFO-1234yf is 80% by mass or more with respect to the total amount of the working medium, GWP decreases.

From the viewpoint of further decreasing GWP, the total content of propane, HFO-1123, and HFO-1234yf is more preferably 85% by mass or more. The upper limit value of the total content is not particularly limited, and may be 100% by mass. The total content may be less than 95% by mass or less than 90% by mass with respect to the total amount of the working medium.

(Second Aspect)

It is preferable that a second aspect of the working medium of the disclosure contains propane, HFO-1123, and HFC-32, in which a mass ratio (propane : HFO-1123) of a content of propane and a content of HFO-1123 is from 18 : 82 to 22 : 78, and a content of HFC-32 is from 5.5% by mass to 19.5% by mass with respect to a total content of propane, HFO-1123, and HFC-32.

In the second aspect, in a case in which the proportion of the content of propane in the total content of propane and HFO-1123 is 18% by mass or more, the discharge temperature and the condensing pressure decrease. On the other hand, in a case in which the proportion of the content of propane in the total content of propane and HFO-1123 is 22% by mass or less, the combustion heat amount decreases, CAP is improved, and the temperature glide and the pressure loss are reduced.

From the viewpoint of improving heat cycle performance, the mass ratio of the content of propane and the content of HFO-1123 is preferably from 19 : 81 to 21 : 79 and more preferably from 19.5 : 80.5 to 20.5 : 79.5.

In the second aspect, in a case in which the content of HFC-32 is 5.5% by mass or more with respect to the total content of propane, HFO-1123, and HFC-32, the combustion heat amount decreases, CAP is improved, and the temperature glide and the pressure loss are reduced. On the other hand, in a case in which the content of HFC-32 is 19.5% by mass or less with respect to the total content of propane, HFO-1123, and HFC-32, the discharge temperature and the condensing pressure decrease.

From the viewpoint of further decreasing the combustion heat amount, the content of HFC-32 is preferably 6.0% by mass or more and more preferably 8.0% by mass or more with respect to the total content of propane, HFO-1123, and HFC-32. From the viewpoint of further decreasing the discharge temperature and the condensing pressure, the content of HFC-32 is preferably 19.0% by mass or less, more preferably 17.0% by mass or less, and still more preferably 15.0% by mass or less with respect to the total content of propane, HFO-1123, and HFC-32.

In the second aspect, from the viewpoint of further decreasing GWP, the total content of propane, HFO-1123, and HFC-32 is preferably 80% by mass or more and more preferably 85% by mass or more with respect to the total amount of the working medium. The upper limit value of the total content is not particularly limited, and may be 100% by mass. The total content may be less than 95% by mass or less than 90% by mass with respect to the total amount of the working medium.

(Third Aspect)

It is preferable that a third aspect of the working medium of the disclosure contains propane, HFO-1123, and HFC-32, in which a mass ratio (propane : HFO-1123) of a content of propane and a content of HFO-1123 is from 5 : 95 to 23 : 77, and a content of HFC-32 is from 20.1% by mass to 21.9% by mass with respect to a total content of propane, HFO-1123, and HFC-32.

In the third aspect, in a case in which the proportion of the content of propane in the total content of propane and HFO-1123 is 5% by mass or more, the discharge temperature decreases. On the other hand, in a case in which the proportion of the content of propane in the total content of propane and HFO-1123 is 23% by mass or less, CAP is improved.

In the third aspect, in a case in which the content of HFC-32 is 20.1% by mass or more with respect to the total content of propane, HFO-1123, and HFC-32, CAP is improved. On the other hand, in a case in which the content of HFC-32 is 21.9% by mass or less with respect to the total content of propane, HFO-1123, and HFC-32, the discharge temperature decreases.

In the third aspect, from the viewpoint of further decreasing GWP, the total content of propane, HFO-1123, and HFC-32 is preferably 80% by mass or more and more preferably 85% by mass or more with respect to the total amount of the working medium. The upper limit value of the total content is not particularly limited, and may be 100% by mass. The total content may be less than 95% by mass or less than 90% by mass with respect to the total amount of the working medium.

(Fourth Aspect)

It is preferable that a fourth aspect of the working medium of the disclosure contains propane, HFO-1123, and HFC-32, in which a mass ratio (propane : HFO-1123) of a content of propane and a content of HFO-1123 is from 18.9 : 81.1 to 23 : 77, and a content of HFC-32 is from 12.5% by mass to 21.5% by mass with respect to a total content of propane, HFO-1123, and HFC-32.

In the fourth aspect, in a case in which the proportion of the content of propane in the total content of propane and HFO-1123 is 18.9% by mass or more, the discharge temperature decreases. On the other hand, in a case in which the proportion of the content of propane in the total content of propane and HFO-1123 is 23% by mass or less, CAP is improved.

In the fourth aspect, in a case in which the content of HFC-32 is 12.5% by mass or more with respect to the total content of propane, HFO-1123, and HFC-32, CAP is improved. On the other hand, in a case in which the content of HFC-32 is 21.5% by mass or less with respect to the total content of propane, HFO-1123, and HFC-32, the discharge temperature decreases.

From the viewpoint of improving the performance of the working medium as a refrigerant, the content of HFC-32 is preferably from 15.0% by mass to 21.5% by mass and more preferably from 18.0% by mass to 21.5% by mass with respect to the total content of propane, HFO-1123, and HFC-32.

In the fourth aspect, from the viewpoint of further decreasing GWP, the total content of propane, HFO-1123, and HFC-32 is preferably 80% by mass or more and more preferably 85% by mass or more with respect to the total amount of the working medium. The upper limit value of the total content is not particularly limited, and may be 100% by mass. The total content may be less than 95% by mass or less than 90% by mass with respect to the total amount of the working medium.

(Fifth Aspect)

It is preferable that a fifth aspect of the working medium of the disclosure contains propane, HFO-1123, and HFO-1234ze(E), in which a content of propane is 25.0% by mass or less with respect to a total content of propane and HFO-1123, a content of HFO-1234ze(E) is from 11.0% by mass to 25.0% by mass with respect to a total content of propane, HFO-1123, and HFO-1234ze(E), and the total content is 78.5% by mass or more with respect to a total amount of the working medium.

In the fifth aspect, in a case in which the content of propane is 25.0% by mass or less with respect to the total content of propane and HFO-1123, the combustion heat amount can be decreased. From the viewpoint of further decreasing the combustion heat amount, the content of propane is more preferably 20.0% by mass or less and still more preferably 15.0% by mass or less. The lower limit value of the content of propane is not particularly limited, and is preferably 2.0% by mass, more preferably 3.0% by mass, still more preferably 4.0% by mass, and particularly preferably 5.0% by mass from the viewpoint of evaporation latent heat.

In the fifth aspect, in a case in which the content of HFO-1234ze(E) is 11.0% by mass or more with respect to the total content of propane, HFO-1123, and HFO-1234ze(E), the condensing pressure decreases, and a condensing pressure of 1.12 or less can be achieved. On the other hand, in a case in which the content of HFO-1234ze(E) is 25.0% by mass or less with respect to the total content of propane, HFO-1123, and HFO-1234ze(E), the temperature glide is reduced, and a temperature glide of 7°C or less can be achieved. From the viewpoint of further decreasing the condensing pressure, the content of HFO-1234ze(E) is more preferably 12.0% by mass or more, still more preferably 13.0% by mass or more, particularly preferably 14.0% by mass or more, and most preferably 15.0% by mass or more with respect to the total content. From the viewpoint of further reducing the temperature glide, the content of HFO-1234ze(E) is more preferably 24.0% by mass or less, still more preferably 23.0% by mass or less, particularly preferably 22.0% by mass or less, and most preferably 21.0% by mass or less with respect to the total content.

From the viewpoint of improving the performance of the working medium as a refrigerant, the total content of propane, HFO-1123, and HFO-1234ze(E) is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Sixth Aspect)

It is preferable that a sixth aspect of the working medium of the disclosure contains propane, HFO-1123, and HFO-1234ze(E), in which a content of propane is 10% by mass or less with respect to a total content of propane and HFO-1123, a content of HFO-1234ze(E) is 15.0% by mass or less with respect to a total content of propane, HFO-1123, and HFO-1234ze(E).

In the sixth aspect, in a case in which the content of propane is 10.0% by mass or less with respect to the total content of propane and HFO-1123, the combustion heat amount can be decreased. From the viewpoint of further decreasing the combustion heat amount, the content of propane is more preferably 8.0% by mass or less and still more preferably 6.0% by mass or less. The lower limit value of the content of propane is not particularly limited, and is preferably 2.0% by mass from the viewpoint of evaporation latent heat.

In the sixth aspect, in a case in which the content of HFO-1234ze(E) is 15.0% by mass or less with respect to the total content of propane, HFO-1123, and HFO-1234ze(E), the temperature glide is reduced, and a temperature glide of 5°C or less can be achieved. From the viewpoint of further reducing the temperature glide, the content of HFO-1234ze(E) is more preferably 14.0% by mass or less, still more preferably 13.0% by mass or less, particularly preferably 12.0% by mass or less, and most preferably 11.0% by mass or less with respect to the total content. The content of HFO-1234ze(E) is not particularly limited, and is, for example, 1.0% by mass.

In the sixth aspect, from the viewpoint of improving the performance of the working medium as a refrigerant, the total content of propane, HFO-1123, and HFO-1234ze(E) is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Seventh Aspect)

It is preferable that a seventh aspect of the working medium of the disclosure contains propane, HFO-1123, and HFO-1234ze(E), in which a content of propane is 20.0% by mass or less with respect to a total content of propane and HFO-1123, a content of HFO-1234ze(E) is 9.0% by mass or less with respect to a total content of propane, HFO-1123, and HFO-1234ze(E).

In the seventh aspect, in a case in which the content of propane is 20.0% by mass or less with respect to the total content of propane and HFO-1123, the combustion heat amount can be decreased. From the viewpoint of further decreasing the combustion heat amount, the content of propane is more preferably 15.0% by mass or less and still more preferably 10.0% by mass or less. The lower limit value of the content of propane is not particularly limited, and is preferably 2.0% by mass from the viewpoint of evaporation latent heat.

In the seventh aspect, in a case in which the content of HFO-1234ze(E) is 9.0% by mass or less with respect to the total content of propane, HFO-1123, and HFO-1234ze(E), the temperature glide is reduced, and a temperature glide of 4°C or less can be achieved. From the viewpoint of further reducing the temperature glide, the content of HFO-1234ze(E) is more preferably 8.0% by mass or less, still more preferably 7.0% by mass or less, and particularly preferably 6.0% by mass or less with respect to the total content. The content of HFO-1234ze(E) is not particularly limited, and is, for example, 1.0% by mass.

In the seventh aspect, from the viewpoint of improving the performance of the working medium as a refrigerant, the total content of propane, HFO-1123, and HFO-1234ze(E) is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Eighth Aspect)

It is preferable that an eighth aspect of the working medium of the disclosure contains propane, HFO-1123, and $CO_2$, in which in a case in which a content of HFO-1123 with respect to a total content of propane, HFO-1123, and $CO_2$ is designated as $X_i$% by mass, and a content of $CO_2$ with respect to the total content is designated as $Y_1$% by mass, $X_1$ and $Y_1$ satisfy the following Formula (1), and the total content is 78.5% by mass or more with respect to a total amount of the working medium.

$$-0.00115X_1^3 + 0.13537X_1^2 - 6.20662X_1 + 151.14664 \leq Y_1 \leq 59...(1)$$

In the eighth aspect, in a case in which the combustion heat amount of the working medium is less than 19.000 MJ/kg, and $X_1$ and $Y_1$ satisfy Formula (1), the temperature glide is reduced, and a temperature glide of 7°C or less can be achieved.

Specifically, in a case in which $X_1$ is from 27.44 to 62.69, $X_1$ and $Y_1$ satisfy Formula (1), and in a case in which $X_1$ is more than 62.69, $X_1$ and $Y_1$ preferably satisfy the following Formula (1a).

$$-0.76902X_1 + 58.98353 \leq Y_1 \leq 59...(1a)$$

From the viewpoint of further reducing the temperature glide, in a case in which a content of propane with respect to the total content is designated as $Z_1$% by mass, $Z_1$ and $Y_1$ more preferably satisfy the following Formula (1A).

$$Y_1 \leq 0.00288Z_1^3 - 0.14523Z_1^2 + 0.75794Z_1 + 31.5...(1A)$$

In a case in which the combustion heat amount of the working medium is less than 19.000 MJ/kg, and $Z_i$ and $Y_i$ satisfy Formula (1A), the temperature glide is reduced, and a temperature glide of 5°C or less can be achieved.

Specifically, in a case in which $Z_1$ is from 1.0 to 23.3, $Z_1$ and $Y_1$ satisfy Formula (1A), and in a case in which $Z_1$ is more than 23.3 and 24.84 or less, $Z_1$ and $Y_1$ preferably satisfy the following Formula (1Aa).

$$3.33333Z_1 - 77.66667 \leq Y_1 \leq 0.00288Z_1^3 - 0.14523Z_1^2 + 0.75794Z_1 + 31.5...(1Aa)$$

From the viewpoint of improving the performance of the working medium as a refrigerant, the total content of propane, HFO-1123, and $CO_2$ is more preferably 85% by mass or more, still more preferably 90% by mass or more, and particularly preferably 95% by mass or more with respect to the total amount of the working medium. The upper limit value of the total content is not particularly limited, and the total content may be 100% by mass.

In the eighth aspect, from the viewpoint of decreasing the condensing pressure, the content of $CO_2$ is preferably 20.0% by mass or less, more preferably 15.0% by mass or less, and still more preferably 10.0% by mass or less with respect to the total content. The lower limit value of the content of $CO_2$ is not particularly limited, and is, for example, 2.0% by mass. In a case in which the content of $CO_2$ is 20.0% by mass or less with respect to the total content, the condensing pressure decreases and a condensing pressure of 1.7 or less can be achieved.

(Ninth Aspect)

It is preferable that a ninth aspect of the working medium of the disclosure contains propane, HFO-1123, and $CF_3I$, in which in a case in which a content of propane with respect to a total content of propane, HFO-1123, and $CF_3I$ is designated as $X_2$% by mass, and a content of $CF_3I$ with respect to the total content is designated as $Y_2$% by mass, $X_2$ and $Y_2$ satisfy the following Formula (2A), and the total content is 78.5% by mass or more with respect to a total amount of the working medium.

$$Y_2 \leq -1.125X_2 + 39 ...(2A)$$

In the ninth aspect, in a case in which the combustion heat amount of the working medium is less than 19.000 MJ/kg, and $X_2$ and $Y_2$ satisfy Formula (2A), the temperature glide is reduced, and a temperature glide of 5°C or less can be achieved.

Specifically, in a case in which $X_2$ is from 1.0 to 23.3, $X_2$ and $Y_2$ satisfy Formula (2A), and in a case in which $X_2$ is more than 23.3 and 25.91 or less, $X_2$ and $Y_2$ preferably satisfy the following Formula (2Aa).

$$3.83055X_2 - 89.44721 \leq Y_2 \leq -1.125X_2 + 39 ...(2Aa)$$

From the viewpoint of decreasing the pressure loss, it is preferable that $X_2$ and $Y_2$ further satisfy the following Formula (2B).

$$Y_2 \leq 0.05994X_2^2 + 0.23676X_2 + 11.85165 ...(2B)$$

In a case in which the combustion heat amount of the working medium is less than 19.000 MJ/kg, and $X_2$ and $Y_2$ satisfy Formulas (2A) and (2B), the pressure loss decreases, and a pressure loss of 1.4 or less can be achieved.

(Tenth Aspect)

It is preferable that a tenth aspect of the working medium of the disclosure contains propane, HFO-1132(E), and the third component, in which a combustion heat amount is less than 15.250 MJ/kg.

In the tenth aspect, it is more preferable that the working medium contains propane, HFO-1132(E), and HFO-1234yf.

In the tenth aspect, the combustion heat amount is more preferably less than 14.0 MJ/kg and still more preferably less than 12.0 MJ/kg.

In the tenth aspect, the content of propane is preferably 30.0% by mass or less, more preferably 20% by mass or less, still more preferably 10.0% by mass or less, and particularly preferably 8.0% by mass or less with respect to the total content of propane and HFO-1132(E). In a case in which the content of propane is 30.0% by mass or less, the combustion heat amount can be further decreased. The lower limit value of the content of propane is not particularly limited, and is, for example, 2.0% by mass.

In the tenth aspect, from the viewpoint of improving the performance of the working medium as a refrigerant, the total content of propane, HFO-1132(E), and the third component is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Eleventh Aspect)

It is preferable that an eleventh aspect of the working medium of the disclosure contains propane, HFO-1132(E), and the third component, in which a content of propane is 10.0% by mass or less with respect to a total content of propane and HFO-1132(E).

In the eleventh aspect, it is more preferable that the working medium contains propane, HFO-1132(E), and HFO-1234yf.

In the eleventh aspect, in a case in which the content of propane is 10.0% by mass or less, the combustion heat amount can be further decreased. The content of propane is more preferably 8.0% by mass or less with respect to the total content of propane and HFO-1132(E). The lower limit value of the content of propane is not particularly limited, and is, for example, 2.0% by mass.

In the eleventh aspect, from the viewpoint of improving the performance of the working medium as a refrigerant, the total content of propane, HFO-1132(E), and the third component is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Twelfth Aspect)

It is preferable that a twelfth aspect of the working medium of the disclosure contains propane, HFO-1123, HFO-1234yf, and HFC-32, in which in a case in which a content of HFC-32 with respect to a total content of propane, HFO-1123, HFO-1234yf, and HFC-32 is designated as A% by mass, a content of HFO-1234yf with respect to the total content is designated as B% by mass, a content of propane with respect to the total content is designated as C% by mass, and a content of HFO-1123 with respect to the total content is designated as D% by mass, A, B, C, and D satisfy the following Formulas (3A) to (3D):

$$19 \leq A \leq 22...(3A)$$

$$0.1562A^2 - 5.88147A + 56.79 \leq B \leq -0.1444A^2 + 4.9917A - 0.9609...(3B)$$

$$3 \leq C \leq -0.0168B + 0.032A + 23.365...(3C)$$

$$(0.0006A^2 + 0.0103A - 2.6844)C + 0.1143A^2 - 5.4982A + 133.96) \leq D \leq (0.00025A + 0.0213)C^2 + (-0.0003A^2 - 0.0055A - 1.1287)C + (-1.0639A + 92.613) \tag{3D}$$

In the twelfth aspect, A, B, C, and D satisfy Formulas (3A) to (3D), so that the condensing pressure decreases and a condensing pressure of less than 1.2122 can be realized, and the compression ratio decreases and a compression ratio of less than 0.9453 can be realized.

In the twelfth aspect, from the viewpoint of improving the performance of the working medium as a refrigerant, the total content is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Thirteenth Aspect)

It is preferable that a thirteenth aspect of the working medium of the disclosure contains propane, HFO-1123, HFO-1234ze(E), and HFC-32, in which in a case in which a content of HFC-32 with respect to a total content of propane, HFO-1123, HFO-1234ze(E), and HFC-32 is designated as E% by mass, a content of HFO-1234ze(E) with respect to the total content is designated as F% by mass, a content of propane with respect to the total content is designated as G% by mass, and a content of HFO-1123 with respect to the total content is designated as H% by mass, E, F, G, and H satisfy the following Formulas (4A) to (4D):

$$19 \leq E \leq 22...(4A)$$

$$-0.0577E^2 + 2.595E - 25.794 \leq F \leq -0.453E + 43.836...(4B)$$

$$2 \leq G \leq 0.030E + 23.40...(4C)$$

$$(0.0053E^2 - 0.1950E - 0.0880)G + (-0.0044E^2 - 0.6605E + 83.7959) \leq H \leq 0.0255G^2 + (-0.0042E^2 + 0.1577E - 2.8414)G + (-1.059E + 91.6916) \qquad (4D)$$

In the thirteenth aspect, E, F, G, and H satisfy Formulas (4A) to (4D), so that the condensing pressure decreases and a condensing pressure of less than 1.1993 can be realized, and the compression ratio decreases and a compression ratio of less than 0.9553 can be realized.

In the thirteenth aspect, from the viewpoint of improving the performance of the working medium as a refrigerant, the total content is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Fourteenth Aspect)

It is preferable that a fourteenth aspect of the working medium of the disclosure contains propane, HFO-1123, $CO_2$, and HFC-32, in which in a case in which a content of HFC-32 with respect to a total content of propane, HFO-1123, $CO_2$, and HFC-32 is designated as J% by mass, a content of $CO_2$ with respect to the total content is designated as K% by mass, a content of propane with respect to the total content is designated as L% by mass, and a content of HFO-1123 with respect to the total content is designated as M% by mass, J, K, L, and M satisfy the following Formulas (5A) to (5D):

$$19 \leq J \leq 22...(5A)$$

$$0.074J^2 - 3.2047J - 37.862 \leq K \leq 0.055J^2 - 2.2893J + 42.055...(5B)$$

$$1 \leq L \leq 0.2985K + 23.9...(5C)$$

$$(-0.00015J^2 + 0.0055J - 0.0637)L^2 + (0.0031J^2 - 0.1025J - 0.0673)L + (-0.0017J^2 - 1.0368J + 91.439) \leq M \leq (-0.000054J^2 + 0.00165J - 0.00500)L^2 + (0.0029J^2 - 0.1040J - 0.1186)L + (-0.1221J^2 + 4.1517J + 39.5) \qquad (5D)$$

In the fourteenth aspect, J, K, L, and M satisfy Formulas (5A) to (5D), so that the condensing pressure decreases and a condensing pressure of less than 1.48789 can be realized, and the pressure loss decreases and a pressure loss of less than 0.92297 can be realized.

In the fourteenth aspect, from the viewpoint of improving the performance of the working medium as a refrigerant, the total content is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Fifteenth Aspect)

It is preferable that a fifteenth aspect of the working medium of the disclosure contains propane, HFO-1123,

CF$_3$I, and HFC-32.

In the fifteenth aspect, the combustion heat amount decreases in the case of containing four components of propane, HFO-1123, CF$_3$I, and HFC-32, as compared with the case of containing three components of propane, HFO-1123, and HFC-32.

In the fifteenth aspect, from the viewpoint of improving the performance of the working medium as a refrigerant, the total content of propane, HFO-1123, CF$_3$I, and HFC-32 is more preferably 85% by mass or more, still more preferably 90% by mass or more, and particularly preferably 95% by mass or more with respect to the total amount of the working medium. The upper limit value of the total content is not particularly limited, and the total content may be 100% by mass.

(Sixteenth Aspect)

It is preferable that a sixteenth aspect of the working medium of the disclosure contains propane, HFO-1123, and HFO-1234yf, in which a content of HFO-1234yf is from 25.0% by mass to 70.0% by mass with respect to a total content of propane, HFO-1123, and HFO-1234yf, a content of propane is 9.0% by mass or less with respect to the total content, and the total content is 78.5% by mass or more with respect to a total amount of the working medium.

In the sixteenth aspect, in a case in which the content of HFO-1234yf is 25.0% by mass or more with respect to the total content of propane, HFO-1123, and HFO-1234yf, the condensing pressure decreases. On the other hand, in a case in which the content of HFO-1234yf is 70.0% by mass or less with respect to the total content of propane, HFO-1123, and HFO-1234yf, CAP is improved.

From the viewpoint of setting the temperature glide to 7°C or less, the content of HFO-1234yf is preferably from 25.0% by mass to 43.0% by mass or from 62.0% by mass to 70.0% by mass with respect to the total content.

In the sixteenth aspect, in a case in which the content of propane is 9.0% by mass or less with respect to the total content, the combustion heat amount decreases. The lower limit value of the content of propane is not particularly limited, and is preferably 2.0% by mass from the viewpoint of increasing evaporation latent heat.

In the sixteenth aspect, the content of HFO-1123 is appropriately adjusted by the content of propane and the content of HFO-1234yf. From the viewpoint of further decreasing the condensing pressure, the content of HFO-1123 is preferably 73% by mass or less with respect to the total content. From the viewpoint of further decreasing CAP, the content of HFO-1123 is preferably 21% by mass or more with respect to the total content.

In the sixteenth aspect, in a case in which the total content of propane, HFO-1123, and HFO-1234yf is 78.5% by mass or more with respect to the total amount of the working medium, performance such as combustion heat amount, condensing pressure, or CAP can be achieved in a well-balanced manner. The total content is preferably 85% by mass or more, more preferably 90% by mass or more, still more preferably 95% by mass or more, and particularly preferably 99% by mass or more with respect to the total amount of the working medium. The upper limit value of the total content is not particularly limited, and may be 100% by mass.

The working medium of the disclosure may contain propane, at least one of HFO-1123 or HFO-1132(E), and an optional component other than the third component as long as the effect of the disclosure is not impaired. Examples of the optional component include HFC and HFO other than HFO-1123, HFO-1132(E), and the third component. The optional component may be used singly, or in combination of two or more kinds thereof.

As the optional component, examples of HFC include 1,1-difluoroethane (HFC-152a), trifluoroethane, 1,1,2,2-tetrafluoroethane (HFC-134), pentafluoropropane, hexafluoropropane, heptafluoropropane, pentafluorobutane, and heptafluorocyclopentane. Examples of HFO include 2-fluoropropene (HFO-1261yf), 1,1,2-trifluoropropene (HFO-1243yc), and 3,3,3-trifluoropropene (HFO-1243zf).

Examples of the compound other than HFC and HFO include hydrocarbons such as propylene, cyclopropane, butane, isobutane, pentane, and isopentane; chlorofluoroolefins (CFO) such as 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112); and hydrochlorofluoroolefins (HCFO) such as 1-chloro-2,3,3,3-tetrafluoropropene (HCFO-1224yd) and 1-chloro-1,2-difluoroethylene (HCFO-1122). The optional component is preferably a component having less influence over the ozone layer and having less influence over global warming.

In a case in which the working medium of the disclosure contains an optional component, the total content of the optional components is preferably less than 10% by mass, more preferably 8% by mass or less, and still more preferably 5% by mass or less with respect to the total amount of the working medium. The lower limit value of the total content of the optional components is not particularly limited, and may be 0% by mass.

<Method of Producing Working Medium>

A method of producing a working medium of the disclosure is a production method in which a combustion heat amount of a working medium, which contains propane, at least one of HFO-1123 or HFO-1132(E), and at least one selected from the group consisting of HFO-1234yf, HFO-1234ze(E), HFC-32, CO$_2$, and CF$_3$I, is calculated, a composition at which the combustion heat amount of the working medium is less than 19.000 MJ/kg is determined, and a working medium having the determined composition is prepared.

According to the method of producing a working medium of the disclosure, a working medium containing propane and having excellent performance as a refrigerant can be easily produced.

In the method of producing a working medium of the disclosure, an imaginary mixture is set by appropriately selecting propane, at least one of HFO-1123 or HFO-1132(E), the third component, and optionally other component, and the combustion heat amount of this mixture is calculated by the above method. In this case, for example, the combustion heat amount of the mixture is calculated while fixing the content of the third component and changing the content of propane and HFO-1123 or HFO-1132(E). Whether the calculated combustion heat amount is 19.000 MJ/kg or more or less than 19.000 MJ/kg is expressed in a triangular diagram to determine a region where the combustion heat amount is less than 19.000 MJ/kg, a desired composition as a working medium is determined from within the determined region, and a mixture of the determined composition is prepared, thereby obtaining a working medium.

Hereinafter, the combustion heat amount for an example of the working medium of the disclosure will be described. In the following table, the composition ratio of each component indicates the content on a mass basis (% by mass). The unit of the combustion heat amount (Heat of Combustion) is (MJ/kg). In the determination (Evaluation) column in the following table, a case in which the combustion heat amount is 19.000 MJ/kg or more is denoted as X, and a case in which the combustion heat amount is less than 19.000 MJ/kg is denoted as O. Examples 1, 2, and the like, which are specific examples of the working medium, are represented as Case 1, Case 2, and the like in the table.

In addition thereto, GWP of the working medium is shown. In the disclosure, GWP is used as an index for measuring an influence of a working medium on global warming. In the disclosure, GWP is a value in 100 years in Intergovernmental Panel on Climate Change (IPCC), Fifth assessment report (2013), unless otherwise specified. Specifically, there are mentioned HFC-32 (677), $CO_2$ (1.0), HFO-1234yf (< 1.0), and HFO-1234ze(E) (< 1.0). For propane, GWP < 1 was adopted from Scientific Assessment of Ozone Depletion 2018. For HFO-1123 and HFO-1132(E), GWP = 0.0054 (HFO-1123) and 0.0059 (HFO-1132(E)) were adopted from J. Phys. Chem. A 2018, 122, 4593-4600. For $CF_3I$, GWP = 0.4 was adopted from EPA Greenhouse Gas Reporting Program: Addition of Global Warming Potentials 2014.

The GWP in the mixture is a weighted average by composition mass. In considering the GWP in the mixture, GWP of 1 or less is calculated as "1".

Table 1 shows the composition, combustion heat amount, and GWP of the working medium of a two-component system of propane and HFO-1123.

[Table 1]

| Case | propane | HFO-1123 | Heat of Combustion | Evaluation | GWP |
|---|---|---|---|---|---|
| 1 | 100.0 | 0.0 | 46.334 | X | 1 |
| 2 | 90.0 | 10.0 | 42.766 | X | 1 |
| 3 | 80.0 | 20.0 | 39.198 | X | 1 |
| 4 | 70.0 | 30.0 | 35.630 | X | 1 |
| 5 | 60.0 | 40.0 | 32.062 | X | 1 |
| 6 | 50.0 | 50.0 | 28.493 | X | 1 |
| 7 | 40.0 | 60.0 | 24.925 | X | 1 |
| 8 | 30.0 | 70.0 | 21.357 | X | 1 |
| 9 | 23.4 | 76.6 | 19.002 | X | 1 |
| 10 | 23.3 | 76.7 | 18.966 | O | 1 |
| 11 | 23.0 | 77.0 | 18.859 | O | 1 |
| 12 | 22.0 | 78.0 | 18.503 | O | 1 |
| 13 | 21.0 | 79.0 | 18.146 | O | 1 |
| 14 | 20.0 | 80.0 | 17.789 | O | 1 |
| 15 | 19.0 | 81.0 | 17.432 | O | 1 |
| 16 | 18.0 | 82.0 | 17.075 | O | 1 |
| 17 | 17.0 | 83.0 | 16.719 | O | 1 |
| 18 | 16.0 | 84.0 | 16.362 | O | 1 |
| 19 | 15.0 | 85.0 | 16.005 | O | 1 |
| 20 | 14.0 | 86.0 | 15.648 | O | 1 |
| 21 | 13.0 | 87.0 | 15.291 | O | 1 |
| 22 | 12.0 | 88.0 | 14.934 | O | 1 |
| 23 | 11.0 | 89.0 | 14.526 | O | 1 |
| 24 | 10.0 | 90.0 | 14.108 | O | 1 |
| 25 | 9.0 | 91.0 | 13.690 | O | 1 |
| 26 | 8.0 | 92.0 | 13.272 | O | 1 |
| 27 | 7.0 | 93.0 | 12.854 | O | 1 |
| 28 | 6.0 | 94.0 | 12.436 | O | 1 |
| 29 | 5.0 | 95.0 | 12.018 | O | 1 |
| 30 | 4.0 | 96.0 | 11.600 | O | 1 |
| 31 | 3.0 | 97.0 | 11.183 | O | 1 |
| 32 | 2.0 | 98.0 | 10.765 | O | 1 |
| 33 | 1.0 | 99.0 | 10.347 | O | 1 |
| 34 | 0.0 | 100.0 | 9.929 | O | 1 |

Tables 2 to 10 show the composition, combustion heat amount, and GWP of the working medium of a three-component system of propane, HFO-1123, and HFO-1234yf.

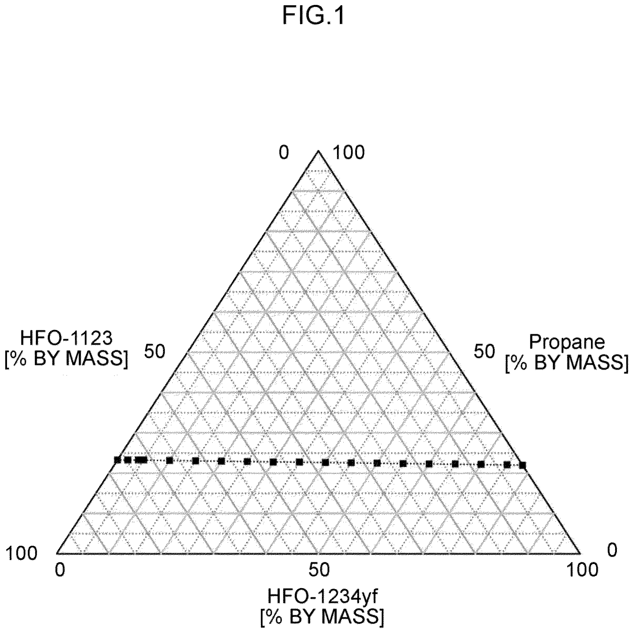

Fig. 1 shows a triangular diagram of a three-component system of propane, HFO-1123, and HFO-1234yf. Fig. 1 shows a straight line connecting (23.3, 76.7, 0.0) and (22.0, 0.0, 78.0) by (propane, HFO-1123, HFO-1234yf). A region including this straight line and having a low propane concentration indicates a region where the combustion heat amount for the three-component system of propane, HFO-1123, and HFO-1234yf is less than 19.000 MJ/kg, and a region having a higher propane concentration than the straight line indicates a region where the combustion heat amount for the three-component system of propane, HFO-1123, and HFO-1234yf is 19.000 MJ/kg or more.

The straight line in Fig. 1 is also expressed as follows:

in the case of (Propane, HFO-1123, HFO-1234yf) = (X, Y, Z),

(X, Y, Z) = (0.01706Y + 22.03843, Y, 77.96157 - 1.01706Y)

※ Y ≤ 76.7.

[Table 2]

| Case | propane | HFO-1123 | HFO-1234yf | Heat of Combustion | Evaluation | GWP |
|---|---|---|---|---|---|---|
| 35 | 24.0 | 74.0 | 2.0 | 19.228 | X | 1 |
| 36 | 23.4 | 74.6 | 2.0 | 19.014 | X | 1 |
| 37 | 23.3 | 74.7 | 2.0 | 18.978 | O | 1 |
| 38 | 23.0 | 75.0 | 2.0 | 18.871 | O | 1 |
| 39 | 22.0 | 76.0 | 2.0 | 18.515 | O | 1 |
| 40 | 21.0 | 77.0 | 2.0 | 18.158 | O | 1 |
| 41 | 20.0 | 78.0 | 2.0 | 17.801 | O | 1 |
| 42 | 19.0 | 79.0 | 2.0 | 17.444 | O | 1 |
| 43 | 18.0 | 80.0 | 2.0 | 17.087 | O | 1 |
| 44 | 17.0 | 81.0 | 2.0 | 16.731 | O | 1 |
| 45 | 16.0 | 82.0 | 2.0 | 16.374 | O | 1 |
| 46 | 15.0 | 83.0 | 2.0 | 16.017 | O | 1 |
| 47 | 14.0 | 84.0 | 2.0 | 15.660 | O | 1 |
| 48 | 13.0 | 85.0 | 2.0 | 15.303 | O | 1 |
| 49 | 12.0 | 86.0 | 2.0 | 14.946 | O | 1 |
| 50 | 11.0 | 87.0 | 2.0 | 14.542 | O | 1 |
| 51 | 10.0 | 88.0 | 2.0 | 14.124 | O | 1 |
| 52 | 9.0 | 89.0 | 2.0 | 13.706 | O | 1 |
| 53 | 8.0 | 90.0 | 2.0 | 13.288 | O | 1 |
| 54 | 7.0 | 91.0 | 2.0 | 12.870 | O | 1 |
| 55 | 6.0 | 92.0 | 2.0 | 12.452 | O | 1 |
| 56 | 5.0 | 93.0 | 2.0 | 12.034 | O | 1 |
| 57 | 4.0 | 94.0 | 2.0 | 11.617 | O | 1 |
| 58 | 3.0 | 95.0 | 2.0 | 11.199 | O | 1 |
| 59 | 2.0 | 96.0 | 2.0 | 10.781 | O | 1 |
| 60 | 1.0 | 97.0 | 2.0 | 10.363 | O | 1 |
| 61 | 0.0 | 98.0 | 2.0 | 9.945 | O | 1 |
| 62 | 24.0 | 72.0 | 4.0 | 19.240 | X | 1 |
| 63 | 23.4 | 72.6 | 4.0 | 19.026 | X | 1 |
| 64 | 23.3 | 72.7 | 4.0 | 18.990 | O | 1 |
| 65 | 23.0 | 73.0 | 4.0 | 18.883 | O | 1 |
| 66 | 22.0 | 74.0 | 4.0 | 18.527 | O | 1 |
| 67 | 21.0 | 75.0 | 4.0 | 18.170 | O | 1 |
| 68 | 20.0 | 76.0 | 4.0 | 17.813 | O | 1 |
| 69 | 19.0 | 77.0 | 4.0 | 17.456 | O | 1 |
| 70 | 18.0 | 78.0 | 4.0 | 17.099 | O | 1 |
| 71 | 17.0 | 79.0 | 4.0 | 16.743 | O | 1 |
| 72 | 16.0 | 80.0 | 4.0 | 16.386 | O | 1 |
| 73 | 15.0 | 81.0 | 4.0 | 16.029 | O | 1 |
| 74 | 14.0 | 82.0 | 4.0 | 15.672 | O | 1 |
| 75 | 13.0 | 83.0 | 4.0 | 15.315 | O | 1 |
| 76 | 12.0 | 84.0 | 4.0 | 14.958 | O | 1 |
| 77 | 11.0 | 85.0 | 4.0 | 14.558 | O | 1 |
| 78 | 10.0 | 86.0 | 4.0 | 14.140 | O | 1 |
| 79 | 9.0 | 87.0 | 4.0 | 13.722 | O | 1 |
| 80 | 8.0 | 88.0 | 4.0 | 13.304 | O | 1 |
| 81 | 7.0 | 89.0 | 4.0 | 12.886 | O | 1 |
| 82 | 6.0 | 90.0 | 4.0 | 12.468 | O | 1 |
| 83 | 5.0 | 91.0 | 4.0 | 12.050 | O | 1 |
| 84 | 4.0 | 92.0 | 4.0 | 11.633 | O | 1 |

[Table 3]

| 85 | 3.0 | 93.0 | 4.0 | 11.215 | O | 1 |
|-----|------|------|------|--------|---|---|
| 86 | 2.0 | 94.0 | 4.0 | 10.797 | O | 1 |
| 87 | 1.0 | 95.0 | 4.0 | 10.379 | O | 1 |
| 88 | 0.0 | 96.0 | 4.0 | 9.961 | O | 1 |
| 89 | 24.0 | 71.0 | 5.0 | 19.246 | X | 1 |
| 90 | 23.4 | 71.6 | 5.0 | 19.032 | X | 1 |
| 91 | 23.3 | 71.7 | 5.0 | 18.996 | O | 1 |
| 92 | 23.0 | 72.0 | 5.0 | 18.889 | O | 1 |
| 93 | 22.0 | 73.0 | 5.0 | 18.533 | O | 1 |
| 94 | 21.0 | 74.0 | 5.0 | 18.176 | O | 1 |
| 95 | 20.0 | 75.0 | 5.0 | 17.819 | O | 1 |
| 96 | 19.0 | 76.0 | 5.0 | 17.462 | O | 1 |
| 97 | 18.0 | 77.0 | 5.0 | 17.105 | O | 1 |
| 98 | 17.0 | 78.0 | 5.0 | 16.749 | O | 1 |
| 99 | 16.0 | 79.0 | 5.0 | 16.392 | O | 1 |
| 100 | 15.0 | 80.0 | 5.0 | 16.035 | O | 1 |
| 101 | 14.0 | 81.0 | 5.0 | 15.678 | O | 1 |
| 102 | 13.0 | 82.0 | 5.0 | 15.321 | O | 1 |
| 103 | 12.0 | 83.0 | 5.0 | 14.964 | O | 1 |
| 104 | 11.0 | 84.0 | 5.0 | 14.566 | O | 1 |
| 105 | 10.0 | 85.0 | 5.0 | 14.148 | O | 1 |
| 106 | 9.0 | 86.0 | 5.0 | 13.730 | O | 1 |
| 107 | 8.0 | 87.0 | 5.0 | 13.312 | O | 1 |
| 108 | 7.0 | 88.0 | 5.0 | 12.894 | O | 1 |
| 109 | 6.0 | 89.0 | 5.0 | 12.476 | O | 1 |
| 110 | 5.0 | 90.0 | 5.0 | 12.059 | O | 1 |
| 111 | 4.0 | 91.0 | 5.0 | 11.641 | O | 1 |
| 112 | 3.0 | 92.0 | 5.0 | 11.223 | O | 1 |
| 113 | 2.0 | 93.0 | 5.0 | 10.805 | O | 1 |
| 114 | 1.0 | 94.0 | 5.0 | 10.387 | O | 1 |
| 115 | 0.0 | 95.0 | 5.0 | 9.969 | O | 1 |
| 116 | 24.0 | 66.0 | 10.0 | 19.276 | X | 1 |
| 117 | 23.3 | 66.7 | 10.0 | 19.026 | X | 1 |
| 118 | 23.2 | 66.8 | 10.0 | 18.991 | O | 1 |
| 119 | 23.0 | 67.0 | 10.0 | 18.919 | O | 1 |
| 120 | 22.0 | 68.0 | 10.0 | 18.563 | O | 1 |
| 121 | 21.0 | 69.0 | 10.0 | 18.206 | O | 1 |
| 122 | 20.0 | 70.0 | 10.0 | 17.849 | O | 1 |
| 123 | 19.0 | 71.0 | 10.0 | 17.492 | O | 1 |
| 124 | 18.0 | 72.0 | 10.0 | 17.135 | O | 1 |
| 125 | 17.0 | 73.0 | 10.0 | 16.779 | O | 1 |
| 126 | 16.0 | 74.0 | 10.0 | 16.422 | O | 1 |
| 127 | 15.0 | 75.0 | 10.0 | 16.065 | O | 1 |
| 128 | 14.0 | 76.0 | 10.0 | 15.708 | O | 1 |
| 129 | 13.0 | 77.0 | 10.0 | 15.351 | O | 1 |
| 130 | 12.0 | 78.0 | 10.0 | 14.994 | O | 1 |
| 131 | 11.0 | 79.0 | 10.0 | 14.606 | O | 1 |
| 132 | 10.0 | 80.0 | 10.0 | 14.188 | O | 1 |
| 133 | 9.0 | 81.0 | 10.0 | 13.770 | O | 1 |
| 134 | 8.0 | 82.0 | 10.0 | 13.352 | O | 1 |

[Table 4]

| 135 | 7.0 | 83.0 | 10.0 | 12.934 | O | 1 |
|---|---|---|---|---|---|---|
| 136 | 6.0 | 84.0 | 10.0 | 12.517 | O | 1 |
| 137 | 5.0 | 85.0 | 10.0 | 12.099 | O | 1 |
| 138 | 4.0 | 86.0 | 10.0 | 11.681 | O | 1 |
| 139 | 3.0 | 87.0 | 10.0 | 11.263 | O | 1 |
| 140 | 2.0 | 88.0 | 10.0 | 10.845 | O | 1 |
| 141 | 1.0 | 89.0 | 10.0 | 10.427 | O | 1 |
| 142 | 0.0 | 90.0 | 10.0 | 10.009 | O | 1 |
| 143 | 24.0 | 61.0 | 15.0 | 19.306 | X | 1 |
| 144 | 23.2 | 61.8 | 15.0 | 19.021 | X | 1 |
| 145 | 23.1 | 61.9 | 15.0 | 18.985 | O | 1 |
| 146 | 23.0 | 62.0 | 15.0 | 18.949 | O | 1 |
| 147 | 22.0 | 63.0 | 15.0 | 18.593 | O | 1 |
| 148 | 21.0 | 64.0 | 15.0 | 18.236 | O | 1 |
| 149 | 20.0 | 65.0 | 15.0 | 17.879 | O | 1 |
| 150 | 19.0 | 66.0 | 15.0 | 17.522 | O | 1 |
| 151 | 18.0 | 67.0 | 15.0 | 17.165 | O | 1 |
| 152 | 17.0 | 68.0 | 15.0 | 16.808 | O | 1 |
| 153 | 16.0 | 69.0 | 15.0 | 16.452 | O | 1 |
| 154 | 15.0 | 70.0 | 15.0 | 16.095 | O | 1 |
| 155 | 14.0 | 71.0 | 15.0 | 15.738 | O | 1 |
| 156 | 13.0 | 72.0 | 15.0 | 15.381 | O | 1 |
| 157 | 12.0 | 73.0 | 15.0 | 15.024 | O | 1 |
| 158 | 11.0 | 74.0 | 15.0 | 14.646 | O | 1 |
| 159 | 10.0 | 75.0 | 15.0 | 14.228 | O | 1 |
| 160 | 9.0 | 76.0 | 15.0 | 13.810 | O | 1 |
| 161 | 8.0 | 77.0 | 15.0 | 13.393 | O | 1 |
| 162 | 7.0 | 78.0 | 15.0 | 12.975 | O | 1 |
| 163 | 6.0 | 79.0 | 15.0 | 12.557 | O | 1 |
| 164 | 5.0 | 80.0 | 15.0 | 12.139 | O | 1 |
| 165 | 4.0 | 81.0 | 15.0 | 11.721 | O | 1 |
| 166 | 3.0 | 82.0 | 15.0 | 11.303 | O | 1 |
| 167 | 2.0 | 83.0 | 15.0 | 10.885 | O | 1 |
| 168 | 1.0 | 84.0 | 15.0 | 10.467 | O | 1 |
| 169 | 0.0 | 85.0 | 15.0 | 10.049 | O | 1 |
| 170 | 24.0 | 56.0 | 20.0 | 19.336 | X | 1 |
| 171 | 23.1 | 56.9 | 20.0 | 19.015 | X | 1 |
| 172 | 23.0 | 57.0 | 20.0 | 18.979 | O | 1 |
| 173 | 22.0 | 58.0 | 20.0 | 18.623 | O | 1 |
| 174 | 21.0 | 59.0 | 20.0 | 18.266 | O | 1 |
| 175 | 20.0 | 60.0 | 20.0 | 17.909 | O | 1 |
| 176 | 19.0 | 61.0 | 20.0 | 17.552 | O | 1 |
| 177 | 18.0 | 62.0 | 20.0 | 17.195 | O | 1 |
| 178 | 17.0 | 63.0 | 20.0 | 16.838 | O | 1 |
| 179 | 16.0 | 64.0 | 20.0 | 16.482 | O | 1 |
| 180 | 15.0 | 65.0 | 20.0 | 16.125 | O | 1 |
| 181 | 14.0 | 66.0 | 20.0 | 15.768 | O | 1 |
| 182 | 13.0 | 67.0 | 20.0 | 15.411 | O | 1 |
| 183 | 12.0 | 68.0 | 20.0 | 15.054 | O | 1 |
| 184 | 11.0 | 69.0 | 20.0 | 14.686 | O | 1 |

[Table 5]

| 185 | 10.0 | 70.0 | 20.0 | 14.269 | O | 1 |
|---|---|---|---|---|---|---|
| 186 | 9.0 | 71.0 | 20.0 | 13.851 | O | 1 |
| 187 | 8.0 | 72.0 | 20.0 | 13.433 | O | 1 |
| 188 | 7.0 | 73.0 | 20.0 | 13.015 | O | 1 |
| 189 | 6.0 | 74.0 | 20.0 | 12.597 | O | 1 |
| 190 | 5.0 | 75.0 | 20.0 | 12.179 | O | 1 |
| 191 | 4.0 | 76.0 | 20.0 | 11.761 | O | 1 |
| 192 | 3.0 | 77.0 | 20.0 | 11.343 | O | 1 |
| 193 | 2.0 | 78.0 | 20.0 | 10.925 | O | 1 |
| 194 | 1.0 | 79.0 | 20.0 | 10.507 | O | 1 |
| 195 | 0.0 | 80.0 | 20.0 | 10.089 | O | 1 |
| 196 | 23.0 | 52.0 | 25.0 | 19.009 | X | 1 |
| 197 | 22.9 | 52.1 | 25.0 | 18.974 | O | 1 |
| 198 | 22.0 | 53.0 | 25.0 | 18.653 | O | 1 |
| 199 | 21.0 | 54.0 | 25.0 | 18.296 | O | 1 |
| 200 | 20.0 | 55.0 | 25.0 | 17.939 | O | 1 |
| 201 | 19.0 | 56.0 | 25.0 | 17.582 | O | 1 |
| 202 | 18.0 | 57.0 | 25.0 | 17.225 | O | 1 |
| 203 | 17.0 | 58.0 | 25.0 | 16.868 | O | 1 |
| 204 | 16.0 | 59.0 | 25.0 | 16.512 | O | 1 |
| 205 | 15.0 | 60.0 | 25.0 | 16.155 | O | 1 |
| 206 | 14.0 | 61.0 | 25.0 | 15.798 | O | 1 |
| 207 | 13.0 | 62.0 | 25.0 | 15.441 | O | 1 |
| 208 | 12.0 | 63.0 | 25.0 | 15.084 | O | 1 |
| 209 | 11.0 | 64.0 | 25.0 | 14.727 | O | 1 |
| 210 | 10.0 | 65.0 | 25.0 | 14.309 | O | 1 |
| 211 | 9.0 | 66.0 | 25.0 | 13.891 | O | 1 |
| 212 | 8.0 | 67.0 | 25.0 | 13.473 | O | 1 |
| 213 | 7.0 | 68.0 | 25.0 | 13.055 | O | 1 |
| 214 | 6.0 | 69.0 | 25.0 | 12.637 | O | 1 |
| 215 | 5.0 | 70.0 | 25.0 | 12.219 | O | 1 |
| 216 | 4.0 | 71.0 | 25.0 | 11.801 | O | 1 |
| 217 | 3.0 | 72.0 | 25.0 | 11.383 | O | 1 |
| 218 | 2.0 | 73.0 | 25.0 | 10.965 | O | 1 |
| 219 | 1.0 | 74.0 | 25.0 | 10.547 | O | 1 |
| 220 | 0.0 | 75.0 | 25.0 | 10.129 | O | 1 |
| 221 | 23.0 | 47.0 | 30.0 | 19.039 | X | 1 |
| 222 | 22.9 | 47.1 | 30.0 | 19.004 | X | 1 |
| 223 | 22.8 | 47.2 | 30.0 | 18.968 | O | 1 |
| 224 | 22.0 | 48.0 | 30.0 | 18.682 | O | 1 |
| 225 | 21.0 | 49.0 | 30.0 | 18.326 | O | 1 |
| 226 | 20.0 | 50.0 | 30.0 | 17.969 | O | 1 |
| 227 | 19.0 | 51.0 | 30.0 | 17.612 | O | 1 |
| 228 | 18.0 | 52.0 | 30.0 | 17.255 | O | 1 |
| 229 | 17.0 | 53.0 | 30.0 | 16.898 | O | 1 |
| 230 | 16.0 | 54.0 | 30.0 | 16.542 | O | 1 |
| 231 | 15.0 | 55.0 | 30.0 | 16.185 | O | 1 |
| 232 | 14.0 | 56.0 | 30.0 | 15.828 | O | 1 |
| 233 | 13.0 | 57.0 | 30.0 | 15.471 | O | 1 |
| 234 | 12.0 | 58.0 | 30.0 | 15.114 | O | 1 |

[Table 6]

| 235 | 11.0 | 59.0 | 30.0 | 14.758 | O | 1 |
|---|---|---|---|---|---|---|
| 236 | 10.0 | 60.0 | 30.0 | 14.349 | O | 1 |
| 237 | 9.0 | 61.0 | 30.0 | 13.931 | O | 1 |
| 238 | 8.0 | 62.0 | 30.0 | 13.513 | O | 1 |
| 239 | 7.0 | 63.0 | 30.0 | 13.095 | O | 1 |
| 240 | 6.0 | 64.0 | 30.0 | 12.677 | O | 1 |
| 241 | 5.0 | 65.0 | 30.0 | 12.259 | O | 1 |
| 242 | 4.0 | 66.0 | 30.0 | 11.841 | O | 1 |
| 243 | 3.0 | 67.0 | 30.0 | 11.423 | O | 1 |
| 244 | 2.0 | 68.0 | 30.0 | 11.005 | O | 1 |
| 245 | 1.0 | 69.0 | 30.0 | 10.588 | O | 1 |
| 246 | 0.0 | 70.0 | 30.0 | 10.170 | O | 1 |
| 247 | 23.0 | 42.0 | 35.0 | 19.069 | X | 1 |
| 248 | 22.9 | 42.1 | 35.0 | 19.034 | X | 1 |
| 249 | 22.8 | 42.2 | 35.0 | 18.998 | O | 1 |
| 250 | 22.0 | 43.0 | 35.0 | 18.712 | O | 1 |
| 251 | 21.0 | 44.0 | 35.0 | 18.356 | O | 1 |
| 252 | 20.0 | 45.0 | 35.0 | 17.999 | O | 1 |
| 253 | 19.0 | 46.0 | 35.0 | 17.642 | O | 1 |
| 254 | 18.0 | 47.0 | 35.0 | 17.285 | O | 1 |
| 255 | 17.0 | 48.0 | 35.0 | 16.928 | O | 1 |
| 256 | 16.0 | 49.0 | 35.0 | 16.572 | O | 1 |
| 257 | 15.0 | 50.0 | 35.0 | 16.215 | O | 1 |
| 258 | 14.0 | 51.0 | 35.0 | 15.858 | O | 1 |
| 259 | 13.0 | 52.0 | 35.0 | 15.501 | O | 1 |
| 260 | 12.0 | 53.0 | 35.0 | 15.144 | O | 1 |
| 261 | 11.0 | 54.0 | 35.0 | 14.787 | O | 1 |
| 262 | 10.0 | 55.0 | 35.0 | 14.389 | O | 1 |
| 263 | 9.0 | 56.0 | 35.0 | 13.971 | O | 1 |
| 264 | 8.0 | 57.0 | 35.0 | 13.553 | O | 1 |
| 265 | 7.0 | 58.0 | 35.0 | 13.135 | O | 1 |
| 266 | 6.0 | 59.0 | 35.0 | 12.717 | O | 1 |
| 267 | 5.0 | 60.0 | 35.0 | 12.299 | O | 1 |
| 268 | 4.0 | 61.0 | 35.0 | 11.881 | O | 1 |
| 269 | 3.0 | 62.0 | 35.0 | 11.463 | O | 1 |
| 270 | 2.0 | 63.0 | 35.0 | 11.046 | O | 1 |
| 271 | 1.0 | 64.0 | 35.0 | 10.628 | O | 1 |
| 272 | 0.0 | 65.0 | 35.0 | 10.210 | O | 1 |
| 273 | 23.0 | 37.0 | 40.0 | 19.099 | X | 1 |
| 274 | 22.8 | 37.2 | 40.0 | 19.028 | X | 1 |
| 275 | 22.7 | 37.3 | 40.0 | 18.992 | O | 1 |
| 276 | 22.0 | 38.0 | 40.0 | 18.742 | O | 1 |
| 277 | 21.0 | 39.0 | 40.0 | 18.386 | O | 1 |
| 278 | 20.0 | 40.0 | 40.0 | 18.029 | O | 1 |
| 279 | 19.0 | 41.0 | 40.0 | 17.672 | O | 1 |
| 280 | 18.0 | 42.0 | 40.0 | 17.315 | O | 1 |
| 281 | 17.0 | 43.0 | 40.0 | 16.958 | O | 1 |
| 282 | 16.0 | 44.0 | 40.0 | 16.602 | O | 1 |
| 283 | 15.0 | 45.0 | 40.0 | 16.245 | O | 1 |
| 284 | 14.0 | 46.0 | 40.0 | 15.888 | O | 1 |

[Table 7]

| 285 | 13.0 | 47.0 | 40.0 | 15.531 | O | 1 |
|---|---|---|---|---|---|---|
| 286 | 12.0 | 48.0 | 40.0 | 15.174 | O | 1 |
| 287 | 11.0 | 49.0 | 40.0 | 14.817 | O | 1 |
| 288 | 10.0 | 50.0 | 40.0 | 14.429 | O | 1 |
| 289 | 9.0 | 51.0 | 40.0 | 14.011 | O | 1 |
| 290 | 8.0 | 52.0 | 40.0 | 13.593 | O | 1 |
| 291 | 7.0 | 53.0 | 40.0 | 13.175 | O | 1 |
| 292 | 6.0 | 54.0 | 40.0 | 12.757 | O | 1 |
| 293 | 5.0 | 55.0 | 40.0 | 12.339 | O | 1 |
| 294 | 4.0 | 56.0 | 40.0 | 11.922 | O | 1 |
| 295 | 3.0 | 57.0 | 40.0 | 11.504 | O | 1 |
| 296 | 2.0 | 58.0 | 40.0 | 11.086 | O | 1 |
| 297 | 1.0 | 59.0 | 40.0 | 10.668 | O | 1 |
| 298 | 0.0 | 60.0 | 40.0 | 10.250 | O | 1 |
| 299 | 23.0 | 32.0 | 45.0 | 19.129 | X | 1 |
| 300 | 22.7 | 32.3 | 45.0 | 19.022 | X | 1 |
| 301 | 22.6 | 32.4 | 45.0 | 18.986 | O | 1 |
| 302 | 22.0 | 33.0 | 45.0 | 18.772 | O | 1 |
| 303 | 21.0 | 34.0 | 45.0 | 18.416 | O | 1 |
| 304 | 20.0 | 35.0 | 45.0 | 18.059 | O | 1 |
| 305 | 19.0 | 36.0 | 45.0 | 17.702 | O | 1 |
| 306 | 18.0 | 37.0 | 45.0 | 17.345 | O | 1 |
| 307 | 17.0 | 38.0 | 45.0 | 16.988 | O | 1 |
| 308 | 16.0 | 39.0 | 45.0 | 16.632 | O | 1 |
| 309 | 15.0 | 40.0 | 45.0 | 16.275 | O | 1 |
| 310 | 14.0 | 41.0 | 45.0 | 15.918 | O | 1 |
| 311 | 13.0 | 42.0 | 45.0 | 15.561 | O | 1 |
| 312 | 12.0 | 43.0 | 45.0 | 15.204 | O | 1 |
| 313 | 11.0 | 44.0 | 45.0 | 14.847 | O | 1 |
| 314 | 10.0 | 45.0 | 45.0 | 14.469 | O | 1 |
| 315 | 9.0 | 46.0 | 45.0 | 14.051 | O | 1 |
| 316 | 8.0 | 47.0 | 45.0 | 13.633 | O | 1 |
| 317 | 7.0 | 48.0 | 45.0 | 13.215 | O | 1 |
| 318 | 6.0 | 49.0 | 45.0 | 12.798 | O | 1 |
| 319 | 5.0 | 50.0 | 45.0 | 12.380 | O | 1 |
| 320 | 4.0 | 51.0 | 45.0 | 11.962 | O | 1 |
| 321 | 3.0 | 52.0 | 45.0 | 11.544 | O | 1 |
| 322 | 2.0 | 53.0 | 45.0 | 11.126 | O | 1 |
| 323 | 1.0 | 54.0 | 45.0 | 10.708 | O | 1 |
| 324 | 0.0 | 55.0 | 45.0 | 10.290 | O | 1 |
| 325 | 23.0 | 27.0 | 50.0 | 19.159 | X | 1 |
| 326 | 22.6 | 27.4 | 50.0 | 19.016 | X | 1 |
| 327 | 22.5 | 27.5 | 50.0 | 18.981 | O | 1 |
| 328 | 22.0 | 28.0 | 50.0 | 18.802 | O | 1 |
| 329 | 21.0 | 29.0 | 50.0 | 18.446 | O | 1 |
| 330 | 20.0 | 30.0 | 50.0 | 18.089 | O | 1 |
| 331 | 19.0 | 31.0 | 50.0 | 17.732 | O | 1 |
| 332 | 18.0 | 32.0 | 50.0 | 17.375 | O | 1 |
| 333 | 17.0 | 33.0 | 50.0 | 17.018 | O | 1 |
| 334 | 16.0 | 34.0 | 50.0 | 16.661 | O | 1 |

[Table 8]

| 335 | 15.0 | 35.0 | 50.0 | 16.305 | O | 1 |
|---|---|---|---|---|---|---|
| 336 | 14.0 | 36.0 | 50.0 | 15.948 | O | 1 |
| 337 | 13.0 | 37.0 | 50.0 | 15.591 | O | 1 |
| 338 | 12.0 | 38.0 | 50.0 | 15.234 | O | 1 |
| 339 | 11.0 | 39.0 | 50.0 | 14.877 | O | 1 |
| 340 | 10.0 | 40.0 | 50.0 | 14.509 | O | 1 |
| 341 | 9.0 | 41.0 | 50.0 | 14.091 | O | 1 |
| 342 | 8.0 | 42.0 | 50.0 | 13.673 | O | 1 |
| 343 | 7.0 | 43.0 | 50.0 | 13.256 | O | 1 |
| 344 | 6.0 | 44.0 | 50.0 | 12.838 | O | 1 |
| 345 | 5.0 | 45.0 | 50.0 | 12.420 | O | 1 |
| 346 | 4.0 | 46.0 | 50.0 | 12.002 | O | 1 |
| 347 | 3.0 | 47.0 | 50.0 | 11.584 | O | 1 |
| 348 | 2.0 | 48.0 | 50.0 | 11.166 | O | 1 |
| 349 | 1.0 | 49.0 | 50.0 | 10.748 | O | 1 |
| 350 | 0.0 | 50.0 | 50.0 | 10.330 | O | 1 |
| 351 | 23.0 | 22.0 | 55.0 | 19.189 | X | 1 |
| 352 | 22.5 | 22.5 | 55.0 | 19.011 | X | 1 |
| 353 | 22.4 | 22.6 | 55.0 | 18.975 | O | 1 |
| 354 | 22.0 | 23.0 | 55.0 | 18.832 | O | 1 |
| 355 | 21.0 | 24.0 | 55.0 | 18.476 | O | 1 |
| 356 | 20.0 | 25.0 | 55.0 | 18.119 | O | 1 |
| 357 | 19.0 | 26.0 | 55.0 | 17.762 | O | 1 |
| 358 | 18.0 | 27.0 | 55.0 | 17.405 | O | 1 |
| 359 | 17.0 | 28.0 | 55.0 | 17.048 | O | 1 |
| 360 | 16.0 | 29.0 | 55.0 | 16.691 | O | 1 |
| 361 | 15.0 | 30.0 | 55.0 | 16.335 | O | 1 |
| 362 | 14.0 | 31.0 | 55.0 | 15.978 | O | 1 |
| 363 | 13.0 | 32.0 | 55.0 | 15.621 | O | 1 |
| 364 | 12.0 | 33.0 | 55.0 | 15.264 | O | 1 |
| 365 | 11.0 | 34.0 | 55.0 | 14.907 | O | 1 |
| 366 | 10.0 | 35.0 | 55.0 | 14.549 | O | 1 |
| 367 | 9.0 | 36.0 | 55.0 | 14.132 | O | 1 |
| 368 | 8.0 | 37.0 | 55.0 | 13.714 | O | 1 |
| 369 | 7.0 | 38.0 | 55.0 | 13.296 | O | 1 |
| 370 | 6.0 | 39.0 | 55.0 | 12.878 | O | 1 |
| 371 | 5.0 | 40.0 | 55.0 | 12.460 | O | 1 |
| 372 | 4.0 | 41.0 | 55.0 | 12.042 | O | 1 |
| 373 | 3.0 | 42.0 | 55.0 | 11.624 | O | 1 |
| 374 | 2.0 | 43.0 | 55.0 | 11.206 | O | 1 |
| 375 | 1.0 | 44.0 | 55.0 | 10.788 | O | 1 |
| 376 | 0.0 | 45.0 | 55.0 | 10.370 | O | 1 |
| 377 | 23.0 | 17.0 | 60.0 | 19.219 | X | 1 |
| 378 | 22.4 | 17.6 | 60.0 | 19.005 | X | 1 |
| 379 | 22.3 | 17.7 | 60.0 | 18.969 | O | 1 |
| 380 | 22.0 | 18.0 | 60.0 | 18.862 | O | 1 |
| 381 | 21.0 | 19.0 | 60.0 | 18.506 | O | 1 |
| 382 | 20.0 | 20.0 | 60.0 | 18.149 | O | 1 |
| 383 | 19.0 | 21.0 | 60.0 | 17.792 | O | 1 |
| 384 | 18.0 | 22.0 | 60.0 | 17.435 | O | 1 |

[Table 9]

| | | | | | | |
|---|---|---|---|---|---|---|
| 385 | 17.0 | 23.0 | 60.0 | 17.078 | O | 1 |
| 386 | 16.0 | 24.0 | 60.0 | 16.721 | O | 1 |
| 387 | 15.0 | 25.0 | 60.0 | 16.365 | O | 1 |
| 388 | 14.0 | 26.0 | 60.0 | 16.008 | O | 1 |
| 389 | 13.0 | 27.0 | 60.0 | 15.651 | O | 1 |
| 390 | 12.0 | 28.0 | 60.0 | 15.294 | O | 1 |
| 391 | 11.0 | 29.0 | 60.0 | 14.937 | O | 1 |
| 392 | 10.0 | 30.0 | 60.0 | 14.581 | O | 1 |
| 393 | 9.0 | 31.0 | 60.0 | 14.172 | O | 1 |
| 394 | 8.0 | 32.0 | 60.0 | 13.754 | O | 1 |
| 395 | 7.0 | 33.0 | 60.0 | 13.336 | O | 1 |
| 396 | 6.0 | 34.0 | 60.0 | 12.918 | O | 1 |
| 397 | 5.0 | 35.0 | 60.0 | 12.500 | O | 1 |
| 398 | 4.0 | 36.0 | 60.0 | 12.082 | O | 1 |
| 399 | 3.0 | 37.0 | 60.0 | 11.664 | O | 1 |
| 400 | 2.0 | 38.0 | 60.0 | 11.246 | O | 1 |
| 401 | 1.0 | 39.0 | 60.0 | 10.828 | O | 1 |
| 402 | 0.0 | 40.0 | 60.0 | 10.410 | O | 1 |
| 403 | 23.0 | 12.0 | 65.0 | 19.249 | X | 1 |
| 404 | 22.4 | 12.6 | 65.0 | 19.035 | X | 1 |
| 405 | 22.3 | 12.7 | 65.0 | 18.999 | O | 1 |
| 406 | 22.0 | 13.0 | 65.0 | 18.892 | O | 1 |
| 407 | 21.0 | 14.0 | 65.0 | 18.535 | O | 1 |
| 408 | 20.0 | 15.0 | 65.0 | 18.179 | O | 1 |
| 409 | 19.0 | 16.0 | 65.0 | 17.822 | O | 1 |
| 410 | 18.0 | 17.0 | 65.0 | 17.465 | O | 1 |
| 411 | 17.0 | 18.0 | 65.0 | 17.108 | O | 1 |
| 412 | 16.0 | 19.0 | 65.0 | 16.751 | O | 1 |
| 413 | 15.0 | 20.0 | 65.0 | 16.395 | O | 1 |
| 414 | 14.0 | 21.0 | 65.0 | 16.038 | O | 1 |
| 415 | 13.0 | 22.0 | 65.0 | 15.681 | O | 1 |
| 416 | 12.0 | 23.0 | 65.0 | 15.324 | O | 1 |
| 417 | 11.0 | 24.0 | 65.0 | 14.967 | O | 1 |
| 418 | 10.0 | 25.0 | 65.0 | 14.611 | O | 1 |
| 419 | 9.0 | 26.0 | 65.0 | 14.212 | O | 1 |
| 420 | 8.0 | 27.0 | 65.0 | 13.794 | O | 1 |
| 421 | 7.0 | 28.0 | 65.0 | 13.376 | O | 1 |
| 422 | 6.0 | 29.0 | 65.0 | 12.958 | O | 1 |
| 423 | 5.0 | 30.0 | 65.0 | 12.540 | O | 1 |
| 424 | 4.0 | 31.0 | 65.0 | 12.122 | O | 1 |
| 425 | 3.0 | 32.0 | 65.0 | 11.704 | O | 1 |
| 426 | 2.0 | 33.0 | 65.0 | 11.286 | O | 1 |
| 427 | 1.0 | 34.0 | 65.0 | 10.868 | O | 1 |
| 428 | 0.0 | 35.0 | 65.0 | 10.451 | O | 1 |
| 429 | 23.0 | 7.0 | 70.0 | 19.279 | X | 1 |
| 430 | 22.3 | 7.7 | 70.0 | 19.029 | X | 1 |
| 431 | 22.2 | 7.8 | 70.0 | 18.994 | O | 1 |
| 432 | 22.0 | 8.0 | 70.0 | 18.922 | O | 1 |
| 433 | 21.0 | 9.0 | 70.0 | 18.565 | O | 1 |
| 434 | 20.0 | 10.0 | 70.0 | 18.209 | O | 1 |

[Table 10]

| | | | | | | |
|---|---|---|---|---|---|---|
| 435 | 19.0 | 11.0 | 70.0 | 17.852 | O | 1 |
| 436 | 18.0 | 12.0 | 70.0 | 17.495 | O | 1 |
| 437 | 17.0 | 13.0 | 70.0 | 17.138 | O | 1 |
| 438 | 16.0 | 14.0 | 70.0 | 16.781 | O | 1 |
| 439 | 15.0 | 15.0 | 70.0 | 16.425 | O | 1 |
| 440 | 14.0 | 16.0 | 70.0 | 16.068 | O | 1 |
| 441 | 13.0 | 17.0 | 70.0 | 15.711 | O | 1 |
| 442 | 12.0 | 18.0 | 70.0 | 15.354 | O | 1 |
| 443 | 11.0 | 19.0 | 70.0 | 14.997 | O | 1 |
| 444 | 10.0 | 20.0 | 70.0 | 14.640 | O | 1 |
| 445 | 9.0 | 21.0 | 70.0 | 14.252 | O | 1 |
| 446 | 8.0 | 22.0 | 70.0 | 13.834 | O | 1 |
| 447 | 7.0 | 23.0 | 70.0 | 13.416 | O | 1 |
| 448 | 6.0 | 24.0 | 70.0 | 12.998 | O | 1 |
| 449 | 5.0 | 25.0 | 70.0 | 12.580 | O | 1 |
| 450 | 4.0 | 26.0 | 70.0 | 12.162 | O | 1 |
| 451 | 3.0 | 27.0 | 70.0 | 11.744 | O | 1 |
| 452 | 2.0 | 28.0 | 70.0 | 11.327 | O | 1 |
| 453 | 1.0 | 29.0 | 70.0 | 10.909 | O | 1 |
| 454 | 0.0 | 30.0 | 70.0 | 10.491 | O | 1 |
| 455 | 23.0 | 2.0 | 75.0 | 19.309 | X | 1 |
| 456 | 22.2 | 2.8 | 75.0 | 19.024 | X | 1 |
| 457 | 22.1 | 2.9 | 75.0 | 18.988 | O | 1 |
| 458 | 22.0 | 3.0 | 75.0 | 18.952 | O | 1 |
| 459 | 21.0 | 4.0 | 75.0 | 18.595 | O | 1 |
| 460 | 20.0 | 5.0 | 75.0 | 18.239 | O | 1 |
| 461 | 19.0 | 6.0 | 75.0 | 17.882 | O | 1 |
| 462 | 18.0 | 7.0 | 75.0 | 17.525 | O | 1 |
| 463 | 17.0 | 8.0 | 75.0 | 17.168 | O | 1 |
| 464 | 16.0 | 9.0 | 75.0 | 16.811 | O | 1 |
| 465 | 15.0 | 10.0 | 75.0 | 16.455 | O | 1 |
| 466 | 14.0 | 11.0 | 75.0 | 16.098 | O | 1 |
| 467 | 13.0 | 12.0 | 75.0 | 15.741 | O | 1 |
| 468 | 12.0 | 13.0 | 75.0 | 15.384 | O | 1 |
| 469 | 11.0 | 14.0 | 75.0 | 15.027 | O | 1 |
| 470 | 10.0 | 15.0 | 75.0 | 14.670 | O | 1 |
| 471 | 9.0 | 16.0 | 75.0 | 14.292 | O | 1 |
| 472 | 8.0 | 17.0 | 75.0 | 13.874 | O | 1 |
| 473 | 7.0 | 18.0 | 75.0 | 13.456 | O | 1 |
| 474 | 6.0 | 19.0 | 75.0 | 13.038 | O | 1 |
| 475 | 5.0 | 20.0 | 75.0 | 12.620 | O | 1 |
| 476 | 4.0 | 21.0 | 75.0 | 12.202 | O | 1 |
| 477 | 3.0 | 22.0 | 75.0 | 11.785 | O | 1 |
| 478 | 2.0 | 23.0 | 75.0 | 11.367 | O | 1 |
| 479 | 1.0 | 24.0 | 75.0 | 10.949 | O | 1 |
| 480 | 0.0 | 25.0 | 75.0 | 10.531 | O | 1 |
| 481 | 22.2 | 0.0 | 77.8 | 19.040 | X | 1 |
| 482 | 22.1 | 0.0 | 77.9 | 19.005 | X | 1 |
| 483 | 22.0 | 0.0 | 78.0 | 18.970 | O | 1 |
| 484 | 21.0 | 0.0 | 79.0 | 18.619 | O | 1 |

Tables 11 to 19 show the composition, combustion heat amount, and GWP of the working medium of a three-component system of propane, HFO-1123, and HFO-1234ze(E).

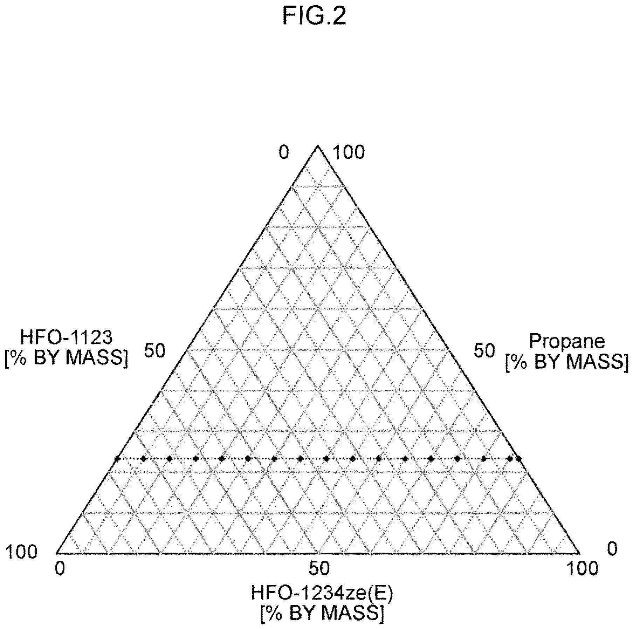

Fig. 2 shows a triangular diagram of a three-component system of propane, HFO-1123, and HFO-1234ze(E). Fig. 2 shows a straight line connecting (23.3, 76.7, 0.0) and (23.3, 0.0, 76.7) by (propane, HFO-1123, HFO-1234ze(E)). A region including this straight line and having a low propane concentration indicates a region where the combustion heat amount for the three-component system of propane, HFO-1123, and HFO-1234ze(E) is less than 19.000 MJ/kg, and a region having a higher propane concentration than the straight line indicates a region where the combustion heat

27

amount for the three-component system of propane, HFO-1123, and HFO-1234ze(E) is 19.000 MJ/kg or more.

The straight line in Fig. 2 is also expressed as follows:

in the case of (Propane, HFO-1123, HFO-1234ze(E)) = (X, Y, Z),
(X, Y, Z) = (23.3, Y, 76.7 - Y)
※ Y ≤ 76.7.

[Table 11]

| Case | propane | HFO-1123 | HFO-1234ze(E) | Heat of Combustion | Evaluation | GWP |
|---|---|---|---|---|---|---|
| 485 | 24.0 | 71.0 | 5.0 | 19.217 | X | 1 |
| 486 | 23.4 | 71.6 | 5.0 | 19.002 | X | 1 |
| 487 | 23.3 | 71.7 | 5.0 | 18.967 | O | 1 |
| 488 | 23.0 | 72.0 | 5.0 | 18.860 | O | 1 |
| 489 | 22.0 | 73.0 | 5.0 | 18.503 | O | 1 |
| 490 | 21.0 | 74.0 | 5.0 | 18.146 | O | 1 |
| 491 | 20.0 | 75.0 | 5.0 | 17.789 | O | 1 |
| 492 | 19.0 | 76.0 | 5.0 | 17.432 | O | 1 |
| 493 | 18.0 | 77.0 | 5.0 | 17.076 | O | 1 |
| 494 | 17.0 | 78.0 | 5.0 | 16.719 | O | 1 |
| 495 | 16.0 | 79.0 | 5.0 | 16.362 | O | 1 |
| 496 | 15.0 | 80.0 | 5.0 | 16.005 | O | 1 |
| 497 | 14.0 | 81.0 | 5.0 | 15.648 | O | 1 |
| 498 | 13.0 | 82.0 | 5.0 | 15.292 | O | 1 |
| 499 | 12.0 | 83.0 | 5.0 | 14.935 | O | 1 |
| 500 | 11.0 | 84.0 | 5.0 | 14.536 | O | 1 |
| 501 | 10.0 | 85.0 | 5.0 | 14.118 | O | 1 |
| 502 | 9.0 | 86.0 | 5.0 | 13.701 | O | 1 |
| 503 | 8.0 | 87.0 | 5.0 | 13.283 | O | 1 |
| 504 | 7.0 | 88.0 | 5.0 | 12.865 | O | 1 |
| 505 | 6.0 | 89.0 | 5.0 | 12.447 | O | 1 |
| 506 | 5.0 | 90.0 | 5.0 | 12.029 | O | 1 |
| 507 | 4.0 | 91.0 | 5.0 | 11.611 | O | 1 |
| 508 | 3.0 | 92.0 | 5.0 | 11.193 | O | 1 |
| 509 | 2.0 | 93.0 | 5.0 | 10.775 | O | 1 |
| 510 | 1.0 | 94.0 | 5.0 | 10.357 | O | 1 |
| 511 | 0.0 | 95.0 | 5.0 | 9.939 | O | 1 |
| 512 | 24.0 | 66.0 | 10.0 | 19.217 | X | 1 |
| 513 | 23.4 | 66.6 | 10.0 | 19.003 | X | 1 |
| 514 | 23.3 | 66.7 | 10.0 | 18.967 | O | 1 |
| 515 | 23.0 | 67.0 | 10.0 | 18.860 | O | 1 |
| 516 | 22.0 | 68.0 | 10.0 | 18.503 | O | 1 |
| 517 | 21.0 | 69.0 | 10.0 | 18.146 | O | 1 |
| 518 | 20.0 | 70.0 | 10.0 | 17.790 | O | 1 |
| 519 | 19.0 | 71.0 | 10.0 | 17.433 | O | 1 |
| 520 | 18.0 | 72.0 | 10.0 | 17.076 | O | 1 |
| 521 | 17.0 | 73.0 | 10.0 | 16.719 | O | 1 |
| 522 | 16.0 | 74.0 | 10.0 | 16.362 | O | 1 |
| 523 | 15.0 | 75.0 | 10.0 | 16.006 | O | 1 |
| 524 | 14.0 | 76.0 | 10.0 | 15.649 | O | 1 |
| 525 | 13.0 | 77.0 | 10.0 | 15.292 | O | 1 |
| 526 | 12.0 | 78.0 | 10.0 | 14.935 | O | 1 |
| 527 | 11.0 | 79.0 | 10.0 | 14.547 | O | 1 |
| 528 | 10.0 | 80.0 | 10.0 | 14.129 | O | 1 |
| 529 | 9.0 | 81.0 | 10.0 | 13.711 | O | 1 |
| 530 | 8.0 | 82.0 | 10.0 | 13.293 | O | 1 |
| 531 | 7.0 | 83.0 | 10.0 | 12.875 | O | 1 |
| 532 | 6.0 | 84.0 | 10.0 | 12.457 | O | 1 |
| 533 | 5.0 | 85.0 | 10.0 | 12.039 | O | 1 |
| 534 | 4.0 | 86.0 | 10.0 | 11.621 | O | 1 |

[Table 12]

| 535 | 3.0 | 87.0 | 10.0 | 11.203 | O | 1 |
|-----|------|------|------|--------|---|---|
| 536 | 2.0 | 88.0 | 10.0 | 10.786 | O | 1 |
| 537 | 1.0 | 89.0 | 10.0 | 10.368 | O | 1 |
| 538 | 0.0 | 90.0 | 10.0 | 9.950 | O | 1 |
| 539 | 24.0 | 61.0 | 15.0 | 19.217 | X | 1 |
| 540 | 23.4 | 61.6 | 15.0 | 19.003 | X | 1 |
| 541 | 23.3 | 61.7 | 15.0 | 18.967 | O | 1 |
| 542 | 23.0 | 62.0 | 15.0 | 18.860 | O | 1 |
| 543 | 22.0 | 63.0 | 15.0 | 18.504 | O | 1 |
| 544 | 21.0 | 64.0 | 15.0 | 18.147 | O | 1 |
| 545 | 20.0 | 65.0 | 15.0 | 17.790 | O | 1 |
| 546 | 19.0 | 66.0 | 15.0 | 17.433 | O | 1 |
| 547 | 18.0 | 67.0 | 15.0 | 17.076 | O | 1 |
| 548 | 17.0 | 68.0 | 15.0 | 16.719 | O | 1 |
| 549 | 16.0 | 69.0 | 15.0 | 16.363 | O | 1 |
| 550 | 15.0 | 70.0 | 15.0 | 16.006 | O | 1 |
| 551 | 14.0 | 71.0 | 15.0 | 15.649 | O | 1 |
| 552 | 13.0 | 72.0 | 15.0 | 15.292 | O | 1 |
| 553 | 12.0 | 73.0 | 15.0 | 14.935 | O | 1 |
| 554 | 11.0 | 74.0 | 15.0 | 14.557 | O | 1 |
| 555 | 10.0 | 75.0 | 15.0 | 14.139 | O | 1 |
| 556 | 9.0 | 76.0 | 15.0 | 13.721 | O | 1 |
| 557 | 8.0 | 77.0 | 15.0 | 13.303 | O | 1 |
| 558 | 7.0 | 78.0 | 15.0 | 12.886 | O | 1 |
| 559 | 6.0 | 79.0 | 15.0 | 12.468 | O | 1 |
| 560 | 5.0 | 80.0 | 15.0 | 12.050 | O | 1 |
| 561 | 4.0 | 81.0 | 15.0 | 11.632 | O | 1 |
| 562 | 3.0 | 82.0 | 15.0 | 11.214 | O | 1 |
| 563 | 2.0 | 83.0 | 15.0 | 10.796 | O | 1 |
| 564 | 1.0 | 84.0 | 15.0 | 10.378 | O | 1 |
| 565 | 0.0 | 85.0 | 15.0 | 9.960 | O | 1 |
| 566 | 24.0 | 56.0 | 20.0 | 19.217 | X | 1 |
| 567 | 23.4 | 56.6 | 20.0 | 19.003 | X | 1 |
| 568 | 23.3 | 56.7 | 20.0 | 18.968 | O | 1 |
| 569 | 23.0 | 57.0 | 20.0 | 18.861 | O | 1 |
| 570 | 22.0 | 58.0 | 20.0 | 18.504 | O | 1 |
| 571 | 21.0 | 59.0 | 20.0 | 18.147 | O | 1 |
| 572 | 20.0 | 60.0 | 20.0 | 17.790 | O | 1 |
| 573 | 19.0 | 61.0 | 20.0 | 17.433 | O | 1 |
| 574 | 18.0 | 62.0 | 20.0 | 17.077 | O | 1 |
| 575 | 17.0 | 63.0 | 20.0 | 16.720 | O | 1 |
| 576 | 16.0 | 64.0 | 20.0 | 16.363 | O | 1 |
| 577 | 15.0 | 65.0 | 20.0 | 16.006 | O | 1 |
| 578 | 14.0 | 66.0 | 20.0 | 15.649 | O | 1 |
| 579 | 13.0 | 67.0 | 20.0 | 15.292 | O | 1 |
| 580 | 12.0 | 68.0 | 20.0 | 14.936 | O | 1 |
| 581 | 11.0 | 69.0 | 20.0 | 14.568 | O | 1 |
| 582 | 10.0 | 70.0 | 20.0 | 14.150 | O | 1 |
| 583 | 9.0 | 71.0 | 20.0 | 13.732 | O | 1 |
| 584 | 8.0 | 72.0 | 20.0 | 13.314 | O | 1 |

[Table 13]

| 585 | 7.0 | 73.0 | 20.0 | 12.896 | O | 1 |
|-----|------|------|------|--------|---|---|
| 586 | 6.0 | 74.0 | 20.0 | 12.478 | O | 1 |
| 587 | 5.0 | 75.0 | 20.0 | 12.060 | O | 1 |
| 588 | 4.0 | 76.0 | 20.0 | 11.642 | O | 1 |
| 589 | 3.0 | 77.0 | 20.0 | 11.224 | O | 1 |
| 590 | 2.0 | 78.0 | 20.0 | 10.806 | O | 1 |
| 591 | 1.0 | 79.0 | 20.0 | 10.389 | O | 1 |
| 592 | 0.0 | 80.0 | 20.0 | 9.971 | O | 1 |
| 593 | 24.0 | 51.0 | 25.0 | 19.218 | X | 1 |
| 594 | 23.4 | 51.6 | 25.0 | 19.004 | X | 1 |
| 595 | 23.3 | 51.7 | 25.0 | 18.968 | O | 1 |
| 596 | 23.0 | 52.0 | 25.0 | 18.861 | O | 1 |
| 597 | 22.0 | 53.0 | 25.0 | 18.504 | O | 1 |
| 598 | 21.0 | 54.0 | 25.0 | 18.147 | O | 1 |
| 599 | 20.0 | 55.0 | 25.0 | 17.790 | O | 1 |
| 600 | 19.0 | 56.0 | 25.0 | 17.434 | O | 1 |
| 601 | 18.0 | 57.0 | 25.0 | 17.077 | O | 1 |
| 602 | 17.0 | 58.0 | 25.0 | 16.720 | O | 1 |
| 603 | 16.0 | 59.0 | 25.0 | 16.363 | O | 1 |
| 604 | 15.0 | 60.0 | 25.0 | 16.006 | O | 1 |
| 605 | 14.0 | 61.0 | 25.0 | 15.650 | O | 1 |
| 606 | 13.0 | 62.0 | 25.0 | 15.293 | O | 1 |
| 607 | 12.0 | 63.0 | 25.0 | 14.936 | O | 1 |
| 608 | 11.0 | 64.0 | 25.0 | 14.578 | O | 1 |
| 609 | 10.0 | 65.0 | 25.0 | 14.160 | O | 1 |
| 610 | 9.0 | 66.0 | 25.0 | 13.742 | O | 1 |
| 611 | 8.0 | 67.0 | 25.0 | 13.324 | O | 1 |
| 612 | 7.0 | 68.0 | 25.0 | 12.906 | O | 1 |
| 613 | 6.0 | 69.0 | 25.0 | 12.489 | O | 1 |
| 614 | 5.0 | 70.0 | 25.0 | 12.071 | O | 1 |
| 615 | 4.0 | 71.0 | 25.0 | 11.653 | O | 1 |
| 616 | 3.0 | 72.0 | 25.0 | 11.235 | O | 1 |
| 617 | 2.0 | 73.0 | 25.0 | 10.817 | O | 1 |
| 618 | 1.0 | 74.0 | 25.0 | 10.399 | O | 1 |
| 619 | 0.0 | 75.0 | 25.0 | 9.981 | O | 1 |
| 620 | 24.0 | 46.0 | 30.0 | 19.218 | X | 1 |
| 621 | 23.4 | 46.6 | 30.0 | 19.004 | X | 1 |
| 622 | 23.3 | 46.7 | 30.0 | 18.968 | O | 1 |
| 623 | 23.0 | 47.0 | 30.0 | 18.861 | O | 1 |
| 624 | 22.0 | 48.0 | 30.0 | 18.504 | O | 1 |
| 625 | 21.0 | 49.0 | 30.0 | 18.148 | O | 1 |
| 626 | 20.0 | 50.0 | 30.0 | 17.791 | O | 1 |
| 627 | 19.0 | 51.0 | 30.0 | 17.434 | O | 1 |
| 628 | 18.0 | 52.0 | 30.0 | 17.077 | O | 1 |
| 629 | 17.0 | 53.0 | 30.0 | 16.720 | O | 1 |
| 630 | 16.0 | 54.0 | 30.0 | 16.363 | O | 1 |
| 631 | 15.0 | 55.0 | 30.0 | 16.007 | O | 1 |
| 632 | 14.0 | 56.0 | 30.0 | 15.650 | O | 1 |
| 633 | 13.0 | 57.0 | 30.0 | 15.293 | O | 1 |
| 634 | 12.0 | 58.0 | 30.0 | 14.936 | O | 1 |

[Table 14]

| 635 | 11.0 | 59.0 | 30.0 | 14.579 | O | 1 |
|---|---|---|---|---|---|---|
| 636 | 10.0 | 60.0 | 30.0 | 14.171 | O | 1 |
| 637 | 9.0 | 61.0 | 30.0 | 13.753 | O | 1 |
| 638 | 8.0 | 62.0 | 30.0 | 13.335 | O | 1 |
| 639 | 7.0 | 63.0 | 30.0 | 12.917 | O | 1 |
| 640 | 6.0 | 64.0 | 30.0 | 12.499 | O | 1 |
| 641 | 5.0 | 65.0 | 30.0 | 12.081 | O | 1 |
| 642 | 4.0 | 66.0 | 30.0 | 11.663 | O | 1 |
| 643 | 3.0 | 67.0 | 30.0 | 11.245 | O | 1 |
| 644 | 2.0 | 68.0 | 30.0 | 10.827 | O | 1 |
| 645 | 1.0 | 69.0 | 30.0 | 10.409 | O | 1 |
| 646 | 0.0 | 70.0 | 30.0 | 9.992 | O | 1 |
| 647 | 24.0 | 41.0 | 35.0 | 19.218 | X | 1 |
| 648 | 23.4 | 41.6 | 35.0 | 19.004 | X | 1 |
| 649 | 23.3 | 41.7 | 35.0 | 18.969 | O | 1 |
| 650 | 23.0 | 42.0 | 35.0 | 18.861 | O | 1 |
| 651 | 22.0 | 43.0 | 35.0 | 18.505 | O | 1 |
| 652 | 21.0 | 44.0 | 35.0 | 18.148 | O | 1 |
| 653 | 20.0 | 45.0 | 35.0 | 17.791 | O | 1 |
| 654 | 19.0 | 46.0 | 35.0 | 17.434 | O | 1 |
| 655 | 18.0 | 47.0 | 35.0 | 17.077 | O | 1 |
| 656 | 17.0 | 48.0 | 35.0 | 16.721 | O | 1 |
| 657 | 16.0 | 49.0 | 35.0 | 16.364 | O | 1 |
| 658 | 15.0 | 50.0 | 35.0 | 16.007 | O | 1 |
| 659 | 14.0 | 51.0 | 35.0 | 15.650 | O | 1 |
| 660 | 13.0 | 52.0 | 35.0 | 15.293 | O | 1 |
| 661 | 12.0 | 53.0 | 35.0 | 14.937 | O | 1 |
| 662 | 11.0 | 54.0 | 35.0 | 14.580 | O | 1 |
| 663 | 10.0 | 55.0 | 35.0 | 14.181 | O | 1 |
| 664 | 9.0 | 56.0 | 35.0 | 13.763 | O | 1 |
| 665 | 8.0 | 57.0 | 35.0 | 13.345 | O | 1 |
| 666 | 7.0 | 58.0 | 35.0 | 12.927 | O | 1 |
| 667 | 6.0 | 59.0 | 35.0 | 12.509 | O | 1 |
| 668 | 5.0 | 60.0 | 35.0 | 12.092 | O | 1 |
| 669 | 4.0 | 61.0 | 35.0 | 11.674 | O | 1 |
| 670 | 3.0 | 62.0 | 35.0 | 11.256 | O | 1 |
| 671 | 2.0 | 63.0 | 35.0 | 10.838 | O | 1 |
| 672 | 1.0 | 64.0 | 35.0 | 10.420 | O | 1 |
| 673 | 0.0 | 65.0 | 35.0 | 10.002 | O | 1 |
| 674 | 24.0 | 36.0 | 40.0 | 19.219 | X | 1 |
| 675 | 23.4 | 36.6 | 40.0 | 19.005 | X | 1 |
| 676 | 23.3 | 36.7 | 40.0 | 18.969 | O | 1 |
| 677 | 23.0 | 37.0 | 40.0 | 18.862 | O | 1 |
| 678 | 22.0 | 38.0 | 40.0 | 18.505 | O | 1 |
| 679 | 21.0 | 39.0 | 40.0 | 18.148 | O | 1 |
| 680 | 20.0 | 40.0 | 40.0 | 17.791 | O | 1 |
| 681 | 19.0 | 41.0 | 40.0 | 17.435 | O | 1 |
| 682 | 18.0 | 42.0 | 40.0 | 17.078 | O | 1 |
| 683 | 17.0 | 43.0 | 40.0 | 16.721 | O | 1 |
| 684 | 16.0 | 44.0 | 40.0 | 16.364 | O | 1 |

[Table 15]

| 685 | 15.0 | 45.0 | 40.0 | 16.007 | O | 1 |
|---|---|---|---|---|---|---|
| 686 | 14.0 | 46.0 | 40.0 | 15.650 | O | 1 |
| 687 | 13.0 | 47.0 | 40.0 | 15.294 | O | 1 |
| 688 | 12.0 | 48.0 | 40.0 | 14.937 | O | 1 |
| 689 | 11.0 | 49.0 | 40.0 | 14.580 | O | 1 |
| 690 | 10.0 | 50.0 | 40.0 | 14.192 | O | 1 |
| 691 | 9.0 | 51.0 | 40.0 | 13.774 | O | 1 |
| 692 | 8.0 | 52.0 | 40.0 | 13.356 | O | 1 |
| 693 | 7.0 | 53.0 | 40.0 | 12.938 | O | 1 |
| 694 | 6.0 | 54.0 | 40.0 | 12.520 | O | 1 |
| 695 | 5.0 | 55.0 | 40.0 | 12.102 | O | 1 |
| 696 | 4.0 | 56.0 | 40.0 | 11.684 | O | 1 |
| 697 | 3.0 | 57.0 | 40.0 | 11.266 | O | 1 |
| 698 | 2.0 | 58.0 | 40.0 | 10.848 | O | 1 |
| 699 | 1.0 | 59.0 | 40.0 | 10.430 | O | 1 |
| 700 | 0.0 | 60.0 | 40.0 | 10.012 | O | 1 |
| 701 | 24.0 | 31.0 | 45.0 | 19.219 | X | 1 |
| 702 | 23.4 | 31.6 | 45.0 | 19.005 | X | 1 |
| 703 | 23.3 | 31.7 | 45.0 | 18.969 | O | 1 |
| 704 | 23.0 | 32.0 | 45.0 | 18.862 | O | 1 |
| 705 | 22.0 | 33.0 | 45.0 | 18.505 | O | 1 |
| 706 | 21.0 | 34.0 | 45.0 | 18.148 | O | 1 |
| 707 | 20.0 | 35.0 | 45.0 | 17.792 | O | 1 |
| 708 | 19.0 | 36.0 | 45.0 | 17.435 | O | 1 |
| 709 | 18.0 | 37.0 | 45.0 | 17.078 | O | 1 |
| 710 | 17.0 | 38.0 | 45.0 | 16.721 | O | 1 |
| 711 | 16.0 | 39.0 | 45.0 | 16.364 | O | 1 |
| 712 | 15.0 | 40.0 | 45.0 | 16.008 | O | 1 |
| 713 | 14.0 | 41.0 | 45.0 | 15.651 | O | 1 |
| 714 | 13.0 | 42.0 | 45.0 | 15.294 | O | 1 |
| 715 | 12.0 | 43.0 | 45.0 | 14.937 | O | 1 |
| 716 | 11.0 | 44.0 | 45.0 | 14.580 | O | 1 |
| 717 | 10.0 | 45.0 | 45.0 | 14.202 | O | 1 |
| 718 | 9.0 | 46.0 | 45.0 | 13.784 | O | 1 |
| 719 | 8.0 | 47.0 | 45.0 | 13.366 | O | 1 |
| 720 | 7.0 | 48.0 | 45.0 | 12.948 | O | 1 |
| 721 | 6.0 | 49.0 | 45.0 | 12.530 | O | 1 |
| 722 | 5.0 | 50.0 | 45.0 | 12.112 | O | 1 |
| 723 | 4.0 | 51.0 | 45.0 | 11.695 | O | 1 |
| 724 | 3.0 | 52.0 | 45.0 | 11.277 | O | 1 |
| 725 | 2.0 | 53.0 | 45.0 | 10.859 | O | 1 |
| 726 | 1.0 | 54.0 | 45.0 | 10.441 | O | 1 |
| 727 | 0.0 | 55.0 | 45.0 | 10.023 | O | 1 |
| 728 | 24.0 | 26.0 | 50.0 | 19.219 | X | 1 |
| 729 | 23.4 | 26.6 | 50.0 | 19.005 | X | 1 |
| 730 | 23.3 | 26.7 | 50.0 | 18.969 | O | 1 |
| 731 | 23.0 | 27.0 | 50.0 | 18.862 | O | 1 |
| 732 | 22.0 | 28.0 | 50.0 | 18.506 | O | 1 |
| 733 | 21.0 | 29.0 | 50.0 | 18.149 | O | 1 |
| 734 | 20.0 | 30.0 | 50.0 | 17.792 | O | 1 |

[Table 16]

| 735 | 19.0 | 31.0 | 50.0 | 17.435 | O | 1 |
| 736 | 18.0 | 32.0 | 50.0 | 17.078 | O | 1 |
| 737 | 17.0 | 33.0 | 50.0 | 16.721 | O | 1 |
| 738 | 16.0 | 34.0 | 50.0 | 16.365 | O | 1 |
| 739 | 15.0 | 35.0 | 50.0 | 16.008 | O | 1 |
| 740 | 14.0 | 36.0 | 50.0 | 15.651 | O | 1 |
| 741 | 13.0 | 37.0 | 50.0 | 15.294 | O | 1 |
| 742 | 12.0 | 38.0 | 50.0 | 14.937 | O | 1 |
| 743 | 11.0 | 39.0 | 50.0 | 14.581 | O | 1 |
| 744 | 10.0 | 40.0 | 50.0 | 14.213 | O | 1 |
| 745 | 9.0 | 41.0 | 50.0 | 13.795 | O | 1 |
| 746 | 8.0 | 42.0 | 50.0 | 13.377 | O | 1 |
| 747 | 7.0 | 43.0 | 50.0 | 12.959 | O | 1 |
| 748 | 6.0 | 44.0 | 50.0 | 12.541 | O | 1 |
| 749 | 5.0 | 45.0 | 50.0 | 12.123 | O | 1 |
| 750 | 4.0 | 46.0 | 50.0 | 11.705 | O | 1 |
| 751 | 3.0 | 47.0 | 50.0 | 11.287 | O | 1 |
| 752 | 2.0 | 48.0 | 50.0 | 10.869 | O | 1 |
| 753 | 1.0 | 49.0 | 50.0 | 10.451 | O | 1 |
| 754 | 0.0 | 50.0 | 50.0 | 10.033 | O | 1 |
| 755 | 24.0 | 21.0 | 55.0 | 19.219 | X | 1 |
| 756 | 23.4 | 21.6 | 55.0 | 19.005 | X | 1 |
| 757 | 23.3 | 21.7 | 55.0 | 18.970 | O | 1 |
| 758 | 23.0 | 22.0 | 55.0 | 18.863 | O | 1 |
| 759 | 22.0 | 23.0 | 55.0 | 18.506 | O | 1 |
| 760 | 21.0 | 24.0 | 55.0 | 18.149 | O | 1 |
| 761 | 20.0 | 25.0 | 55.0 | 17.792 | O | 1 |
| 762 | 19.0 | 26.0 | 55.0 | 17.435 | O | 1 |
| 763 | 18.0 | 27.0 | 55.0 | 17.079 | O | 1 |
| 764 | 17.0 | 28.0 | 55.0 | 16.722 | O | 1 |
| 765 | 16.0 | 29.0 | 55.0 | 16.365 | O | 1 |
| 766 | 15.0 | 30.0 | 55.0 | 16.008 | O | 1 |
| 767 | 14.0 | 31.0 | 55.0 | 15.651 | O | 1 |
| 768 | 13.0 | 32.0 | 55.0 | 15.295 | O | 1 |
| 769 | 12.0 | 33.0 | 55.0 | 14.938 | O | 1 |
| 770 | 11.0 | 34.0 | 55.0 | 14.581 | O | 1 |
| 771 | 10.0 | 35.0 | 55.0 | 14.223 | O | 1 |
| 772 | 9.0 | 36.0 | 55.0 | 13.805 | O | 1 |
| 773 | 8.0 | 37.0 | 55.0 | 13.387 | O | 1 |
| 774 | 7.0 | 38.0 | 55.0 | 12.969 | O | 1 |
| 775 | 6.0 | 39.0 | 55.0 | 12.551 | O | 1 |
| 776 | 5.0 | 40.0 | 55.0 | 12.133 | O | 1 |
| 777 | 4.0 | 41.0 | 55.0 | 11.715 | O | 1 |
| 778 | 3.0 | 42.0 | 55.0 | 11.298 | O | 1 |
| 779 | 2.0 | 43.0 | 55.0 | 10.880 | O | 1 |
| 780 | 1.0 | 44.0 | 55.0 | 10.462 | O | 1 |
| 781 | 0.0 | 45.0 | 55.0 | 10.044 | O | 1 |
| 782 | 24.0 | 16.0 | 60.0 | 19.220 | X | 1 |
| 783 | 23.4 | 16.6 | 60.0 | 19.006 | X | 1 |
| 784 | 23.3 | 16.7 | 60.0 | 18.970 | O | 1 |

[Table 17]

| 785 | 23.0 | 17.0 | 60.0 | 18.863 | O | 1 |
| 786 | 22.0 | 18.0 | 60.0 | 18.506 | O | 1 |
| 787 | 21.0 | 19.0 | 60.0 | 18.149 | O | 1 |
| 788 | 20.0 | 20.0 | 60.0 | 17.792 | O | 1 |
| 789 | 19.0 | 21.0 | 60.0 | 17.436 | O | 1 |
| 790 | 18.0 | 22.0 | 60.0 | 17.079 | O | 1 |
| 791 | 17.0 | 23.0 | 60.0 | 16.722 | O | 1 |
| 792 | 16.0 | 24.0 | 60.0 | 16.365 | O | 1 |
| 793 | 15.0 | 25.0 | 60.0 | 16.008 | O | 1 |
| 794 | 14.0 | 26.0 | 60.0 | 15.652 | O | 1 |
| 795 | 13.0 | 27.0 | 60.0 | 15.295 | O | 1 |
| 796 | 12.0 | 28.0 | 60.0 | 14.938 | O | 1 |
| 797 | 11.0 | 29.0 | 60.0 | 14.581 | O | 1 |
| 798 | 10.0 | 30.0 | 60.0 | 14.224 | O | 1 |
| 799 | 9.0 | 31.0 | 60.0 | 13.815 | O | 1 |
| 800 | 8.0 | 32.0 | 60.0 | 13.398 | O | 1 |
| 801 | 7.0 | 33.0 | 60.0 | 12.980 | O | 1 |
| 802 | 6.0 | 34.0 | 60.0 | 12.562 | O | 1 |
| 803 | 5.0 | 35.0 | 60.0 | 12.144 | O | 1 |
| 804 | 4.0 | 36.0 | 60.0 | 11.726 | O | 1 |
| 805 | 3.0 | 37.0 | 60.0 | 11.308 | O | 1 |
| 806 | 2.0 | 38.0 | 60.0 | 10.890 | O | 1 |
| 807 | 1.0 | 39.0 | 60.0 | 10.472 | O | 1 |
| 808 | 0.0 | 40.0 | 60.0 | 10.054 | O | 1 |
| 809 | 24.0 | 11.0 | 65.0 | 19.220 | X | 1 |
| 810 | 23.4 | 11.6 | 65.0 | 19.006 | X | 1 |
| 811 | 23.3 | 11.7 | 65.0 | 18.970 | O | 1 |
| 812 | 23.0 | 12.0 | 65.0 | 18.863 | O | 1 |
| 813 | 22.0 | 13.0 | 65.0 | 18.506 | O | 1 |
| 814 | 21.0 | 14.0 | 65.0 | 18.150 | O | 1 |
| 815 | 20.0 | 15.0 | 65.0 | 17.793 | O | 1 |
| 816 | 19.0 | 16.0 | 65.0 | 17.436 | O | 1 |
| 817 | 18.0 | 17.0 | 65.0 | 17.079 | O | 1 |
| 818 | 17.0 | 18.0 | 65.0 | 16.722 | O | 1 |
| 819 | 16.0 | 19.0 | 65.0 | 16.366 | O | 1 |
| 820 | 15.0 | 20.0 | 65.0 | 16.009 | O | 1 |
| 821 | 14.0 | 21.0 | 65.0 | 15.652 | O | 1 |
| 822 | 13.0 | 22.0 | 65.0 | 15.295 | O | 1 |
| 823 | 12.0 | 23.0 | 65.0 | 14.938 | O | 1 |
| 824 | 11.0 | 24.0 | 65.0 | 14.581 | O | 1 |
| 825 | 10.0 | 25.0 | 65.0 | 14.225 | O | 1 |
| 826 | 9.0 | 26.0 | 65.0 | 13.826 | O | 1 |
| 827 | 8.0 | 27.0 | 65.0 | 13.408 | O | 1 |
| 828 | 7.0 | 28.0 | 65.0 | 12.990 | O | 1 |
| 829 | 6.0 | 29.0 | 65.0 | 12.572 | O | 1 |
| 830 | 5.0 | 30.0 | 65.0 | 12.154 | O | 1 |
| 831 | 4.0 | 31.0 | 65.0 | 11.736 | O | 1 |
| 832 | 3.0 | 32.0 | 65.0 | 11.318 | O | 1 |
| 833 | 2.0 | 33.0 | 65.0 | 10.901 | O | 1 |
| 834 | 1.0 | 34.0 | 65.0 | 10.483 | O | 1 |

[Table 18]

| 835 | 0.0 | 35.0 | 65.0 | 10.065 | O | 1 |
|-----|------|------|------|--------|---|---|
| 836 | 24.0 | 6.0 | 70.0 | 19.220 | X | 1 |
| 837 | 23.4 | 6.6 | 70.0 | 19.006 | X | 1 |
| 838 | 23.3 | 6.7 | 70.0 | 18.971 | O | 1 |
| 839 | 23.0 | 7.0 | 70.0 | 18.864 | O | 1 |
| 840 | 22.0 | 8.0 | 70.0 | 18.507 | O | 1 |
| 841 | 21.0 | 9.0 | 70.0 | 18.150 | O | 1 |
| 842 | 20.0 | 10.0 | 70.0 | 17.793 | O | 1 |
| 843 | 19.0 | 11.0 | 70.0 | 17.436 | O | 1 |
| 844 | 18.0 | 12.0 | 70.0 | 17.079 | O | 1 |
| 845 | 17.0 | 13.0 | 70.0 | 16.723 | O | 1 |
| 846 | 16.0 | 14.0 | 70.0 | 16.366 | O | 1 |
| 847 | 15.0 | 15.0 | 70.0 | 16.009 | O | 1 |
| 848 | 14.0 | 16.0 | 70.0 | 15.652 | O | 1 |
| 849 | 13.0 | 17.0 | 70.0 | 15.295 | O | 1 |
| 850 | 12.0 | 18.0 | 70.0 | 14.939 | O | 1 |
| 851 | 11.0 | 19.0 | 70.0 | 14.582 | O | 1 |
| 852 | 10.0 | 20.0 | 70.0 | 14.225 | O | 1 |
| 853 | 9.0 | 21.0 | 70.0 | 13.836 | O | 1 |
| 854 | 8.0 | 22.0 | 70.0 | 13.418 | O | 1 |
| 855 | 7.0 | 23.0 | 70.0 | 13.001 | O | 1 |
| 856 | 6.0 | 24.0 | 70.0 | 12.583 | O | 1 |
| 857 | 5.0 | 25.0 | 70.0 | 12.165 | O | 1 |
| 858 | 4.0 | 26.0 | 70.0 | 11.747 | O | 1 |
| 859 | 3.0 | 27.0 | 70.0 | 11.329 | O | 1 |
| 860 | 2.0 | 28.0 | 70.0 | 10.911 | O | 1 |
| 861 | 1.0 | 29.0 | 70.0 | 10.493 | O | 1 |
| 862 | 0.0 | 30.0 | 70.0 | 10.075 | O | 1 |
| 863 | 24.0 | 1.0 | 75.0 | 19.221 | X | 1 |
| 864 | 23.4 | 1.6 | 75.0 | 19.007 | X | 1 |
| 865 | 23.3 | 1.7 | 75.0 | 18.971 | O | 1 |
| 866 | 23.0 | 2.0 | 75.0 | 18.864 | O | 1 |
| 867 | 22.0 | 3.0 | 75.0 | 18.507 | O | 1 |
| 868 | 21.0 | 4.0 | 75.0 | 18.150 | O | 1 |
| 869 | 20.0 | 5.0 | 75.0 | 17.793 | O | 1 |
| 870 | 19.0 | 6.0 | 75.0 | 17.437 | O | 1 |
| 871 | 18.0 | 7.0 | 75.0 | 17.080 | O | 1 |
| 872 | 17.0 | 8.0 | 75.0 | 16.723 | O | 1 |
| 873 | 16.0 | 9.0 | 75.0 | 16.366 | O | 1 |
| 874 | 15.0 | 10.0 | 75.0 | 16.009 | O | 1 |
| 875 | 14.0 | 11.0 | 75.0 | 15.652 | O | 1 |
| 876 | 13.0 | 12.0 | 75.0 | 15.296 | O | 1 |
| 877 | 12.0 | 13.0 | 75.0 | 14.939 | O | 1 |
| 878 | 11.0 | 14.0 | 75.0 | 14.582 | O | 1 |
| 879 | 10.0 | 15.0 | 75.0 | 14.225 | O | 1 |
| 880 | 9.0 | 16.0 | 75.0 | 13.847 | O | 1 |
| 881 | 8.0 | 17.0 | 75.0 | 13.429 | O | 1 |
| 882 | 7.0 | 18.0 | 75.0 | 13.011 | O | 1 |
| 883 | 6.0 | 19.0 | 75.0 | 12.593 | O | 1 |
| 884 | 5.0 | 20.0 | 75.0 | 12.175 | O | 1 |

[Table 19]

| 885 | 4.0 | 21.0 | 75.0 | 11.757 | O | 1 |
| 886 | 3.0 | 22.0 | 75.0 | 11.339 | O | 1 |
| 887 | 2.0 | 23.0 | 75.0 | 10.921 | O | 1 |
| 888 | 1.0 | 24.0 | 75.0 | 10.504 | O | 1 |
| 889 | 0.0 | 25.0 | 75.0 | 10.086 | O | 1 |
| 890 | 23.4 | 0.0 | 76.6 | 19.007 | X | 1 |
| 891 | 23.3 | 0.0 | 76.7 | 18.971 | O | 1 |
| 892 | 23.0 | 0.0 | 77.0 | 18.864 | O | 1 |
| 893 | 22.0 | 0.0 | 78.0 | 18.507 | O | 1 |

Tables 20 to 23 show the composition, combustion heat amount, and GWP of the working medium of a three-component system of propane, HFO-1123, and HFC-32.

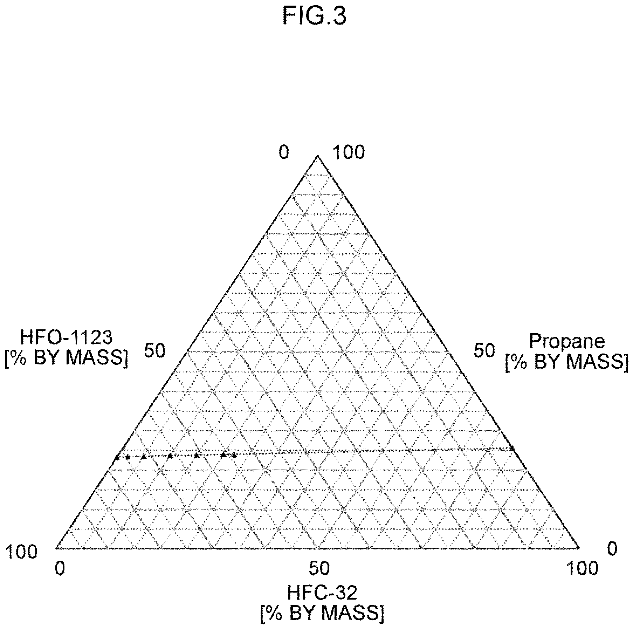

Fig. 3 shows a triangular diagram of a three-component system of propane, HFO-1123, and HFC-32. Fig. 3 shows a straight line connecting (23.3, 76.7, 0.0) and (25.6, 0.0, 74.4) by (propane, HFO-1123, HFC-32). A region including this straight line and having a low propane concentration indicates a region where the combustion heat amount for the three-component system of propane, HFO-1123, and HFC-32 is less than 19.000 MJ/kg, and a region having a higher propane concentration than the straight line indicates a region where the combustion heat amount for the three-component system of propane, HFO-1123, and HFC-32 is 19.000 MJ/kg or more.

The straight line in Fig. 1 is also expressed as follows:

in the case of (Propane, HFO-1123, HFC-32) = (X, Y, Z),
(X, Y, Z) = (-0.029356Y+ 25.6, Y, 74.4 - 0.970644Y)
※ $Y \leq 76.7$.

[Table 20]

| Case | propane | HFO-1123 | HFC-32 | Heat of Combustion | Evaluation | GWP |
|---|---|---|---|---|---|---|
| 894 | 24.0 | 74.0 | 2.0 | 19.194 | X | 15 |
| 895 | 23.5 | 74.5 | 2.0 | 19.016 | X | 15 |
| 896 | 23.4 | 74.6 | 2.0 | 18.980 | O | 15 |
| 897 | 23.0 | 75.0 | 2.0 | 18.837 | O | 15 |
| 898 | 22.0 | 76.0 | 2.0 | 18.481 | O | 15 |
| 899 | 21.0 | 77.0 | 2.0 | 18.124 | O | 15 |
| 900 | 20.0 | 78.0 | 2.0 | 17.767 | O | 15 |
| 901 | 19.0 | 79.0 | 2.0 | 17.410 | O | 15 |
| 902 | 18.0 | 80.0 | 2.0 | 17.053 | O | 15 |
| 903 | 17.0 | 81.0 | 2.0 | 16.696 | O | 15 |
| 904 | 16.0 | 82.0 | 2.0 | 16.340 | O | 15 |
| 905 | 15.0 | 83.0 | 2.0 | 15.983 | O | 15 |
| 906 | 14.0 | 84.0 | 2.0 | 15.626 | O | 15 |
| 907 | 13.0 | 85.0 | 2.0 | 15.269 | O | 15 |
| 908 | 12.0 | 86.0 | 2.0 | 14.912 | O | 15 |
| 909 | 11.0 | 87.0 | 2.0 | 14.518 | O | 15 |
| 910 | 10.0 | 88.0 | 2.0 | 14.100 | O | 15 |
| 911 | 9.0 | 89.0 | 2.0 | 13.682 | O | 15 |
| 912 | 8.0 | 90.0 | 2.0 | 13.265 | O | 15 |
| 913 | 7.0 | 91.0 | 2.0 | 12.847 | O | 15 |
| 914 | 6.0 | 92.0 | 2.0 | 12.429 | O | 15 |
| 915 | 5.0 | 93.0 | 2.0 | 12.011 | O | 15 |
| 916 | 4.0 | 94.0 | 2.0 | 11.593 | O | 15 |
| 917 | 3.0 | 95.0 | 2.0 | 11.175 | O | 15 |
| 918 | 2.0 | 96.0 | 2.0 | 10.757 | O | 15 |
| 919 | 1.0 | 97.0 | 2.0 | 10.339 | O | 15 |
| 920 | 0.0 | 98.0 | 2.0 | 9.921 | O | 15 |
| 921 | 24.0 | 71.0 | 5.0 | 19.161 | X | 35 |
| 922 | 23.6 | 71.4 | 5.0 | 19.018 | X | 35 |
| 923 | 23.5 | 71.5 | 5.0 | 18.983 | O | 35 |
| 924 | 23.0 | 72.0 | 5.0 | 18.804 | O | 35 |
| 925 | 22.0 | 73.0 | 5.0 | 18.447 | O | 35 |
| 926 | 21.0 | 74.0 | 5.0 | 18.091 | O | 35 |
| 927 | 20.0 | 75.0 | 5.0 | 17.734 | O | 35 |
| 928 | 19.0 | 76.0 | 5.0 | 17.377 | O | 35 |
| 929 | 18.0 | 77.0 | 5.0 | 17.020 | O | 35 |
| 930 | 17.0 | 78.0 | 5.0 | 16.663 | O | 35 |
| 931 | 16.0 | 79.0 | 5.0 | 16.307 | O | 35 |
| 932 | 15.0 | 80.0 | 5.0 | 15.950 | O | 35 |
| 933 | 14.0 | 81.0 | 5.0 | 15.593 | O | 35 |
| 934 | 13.0 | 82.0 | 5.0 | 15.236 | O | 35 |
| 935 | 12.0 | 83.0 | 5.0 | 14.879 | O | 35 |
| 936 | 11.0 | 84.0 | 5.0 | 14.507 | O | 35 |
| 937 | 10.0 | 85.0 | 5.0 | 14.089 | O | 35 |
| 938 | 9.0 | 86.0 | 5.0 | 13.671 | O | 35 |
| 939 | 8.0 | 87.0 | 5.0 | 13.253 | O | 35 |
| 940 | 7.0 | 88.0 | 5.0 | 12.835 | O | 35 |
| 941 | 6.0 | 89.0 | 5.0 | 12.417 | O | 35 |
| 942 | 5.0 | 90.0 | 5.0 | 11.999 | O | 35 |
| 943 | 4.0 | 91.0 | 5.0 | 11.581 | O | 35 |

[Table 21]

| 944 | 3.0 | 92.0 | 5.0 | 11.164 | O | 35 |
|---|---|---|---|---|---|---|
| 945 | 2.0 | 93.0 | 5.0 | 10.746 | O | 35 |
| 946 | 1.0 | 94.0 | 5.0 | 10.328 | O | 35 |
| 947 | 0.0 | 95.0 | 5.0 | 9.910 | O | 35 |
| 948 | 24.0 | 66.0 | 10.0 | 19.106 | X | 69 |
| 949 | 23.8 | 66.2 | 10.0 | 19.034 | X | 69 |
| 950 | 23.7 | 66.3 | 10.0 | 18.999 | O | 69 |
| 951 | 23.0 | 67.0 | 10.0 | 18.749 | O | 69 |
| 952 | 22.0 | 68.0 | 10.0 | 18.392 | O | 69 |
| 953 | 21.0 | 69.0 | 10.0 | 18.035 | O | 69 |
| 954 | 20.0 | 70.0 | 10.0 | 17.679 | O | 69 |
| 955 | 19.0 | 71.0 | 10.0 | 17.322 | O | 69 |
| 956 | 18.0 | 72.0 | 10.0 | 16.965 | O | 69 |
| 957 | 17.0 | 73.0 | 10.0 | 16.608 | O | 69 |
| 958 | 16.0 | 74.0 | 10.0 | 16.251 | O | 69 |
| 959 | 15.0 | 75.0 | 10.0 | 15.894 | O | 69 |
| 960 | 14.0 | 76.0 | 10.0 | 15.538 | O | 69 |
| 961 | 13.0 | 77.0 | 10.0 | 15.181 | O | 69 |
| 962 | 12.0 | 78.0 | 10.0 | 14.824 | O | 69 |
| 963 | 11.0 | 79.0 | 10.0 | 14.467 | O | 69 |
| 964 | 10.0 | 80.0 | 10.0 | 14.070 | O | 69 |
| 965 | 9.0 | 81.0 | 10.0 | 13.652 | O | 69 |
| 966 | 8.0 | 82.0 | 10.0 | 13.234 | O | 69 |
| 967 | 7.0 | 83.0 | 10.0 | 12.816 | O | 69 |
| 968 | 6.0 | 84.0 | 10.0 | 12.398 | O | 69 |
| 969 | 5.0 | 85.0 | 10.0 | 11.980 | O | 69 |
| 970 | 4.0 | 86.0 | 10.0 | 11.562 | O | 69 |
| 971 | 3.0 | 87.0 | 10.0 | 11.144 | O | 69 |
| 972 | 2.0 | 88.0 | 10.0 | 10.727 | O | 69 |
| 973 | 1.0 | 89.0 | 10.0 | 10.309 | O | 69 |
| 974 | 0.0 | 90.0 | 10.0 | 9.891 | O | 69 |
| 975 | 24.0 | 61.0 | 15.0 | 19.051 | X | 102 |
| 976 | 23.9 | 61.1 | 15.0 | 19.015 | X | 102 |
| 977 | 23.8 | 61.2 | 15.0 | 18.979 | O | 102 |
| 978 | 23.0 | 62.0 | 15.0 | 18.694 | O | 102 |
| 979 | 22.0 | 63.0 | 15.0 | 18.337 | O | 102 |
| 980 | 21.0 | 64.0 | 15.0 | 17.980 | O | 102 |
| 981 | 20.0 | 65.0 | 15.0 | 17.623 | O | 102 |
| 982 | 19.0 | 66.0 | 15.0 | 17.266 | O | 102 |
| 983 | 18.0 | 67.0 | 15.0 | 16.910 | O | 102 |
| 984 | 17.0 | 68.0 | 15.0 | 16.553 | O | 102 |
| 985 | 16.0 | 69.0 | 15.0 | 16.196 | O | 102 |
| 986 | 15.0 | 70.0 | 15.0 | 15.839 | O | 102 |
| 987 | 14.0 | 71.0 | 15.0 | 15.482 | O | 102 |
| 988 | 13.0 | 72.0 | 15.0 | 15.126 | O | 102 |
| 989 | 12.0 | 73.0 | 15.0 | 14.769 | O | 102 |
| 990 | 11.0 | 74.0 | 15.0 | 14.412 | O | 102 |
| 991 | 10.0 | 75.0 | 15.0 | 14.051 | O | 102 |
| 992 | 9.0 | 76.0 | 15.0 | 13.633 | O | 102 |
| 993 | 8.0 | 77.0 | 15.0 | 13.215 | O | 102 |

[Table 22]

| 994 | 7.0 | 78.0 | 15.0 | 12.797 | O | 102 |
|---|---|---|---|---|---|---|
| 995 | 6.0 | 79.0 | 15.0 | 12.379 | O | 102 |
| 996 | 5.0 | 80.0 | 15.0 | 11.961 | O | 102 |
| 997 | 4.0 | 81.0 | 15.0 | 11.543 | O | 102 |
| 998 | 3.0 | 82.0 | 15.0 | 11.125 | O | 102 |
| 999 | 2.0 | 83.0 | 15.0 | 10.707 | O | 102 |
| 1000 | 1.0 | 84.0 | 15.0 | 10.290 | O | 102 |
| 1001 | 0.0 | 85.0 | 15.0 | 9.872 | O | 102 |
| 1002 | 25.0 | 55.0 | 20.0 | 19.352 | X | 136 |
| 1003 | 24.1 | 55.9 | 20.0 | 19.031 | X | 136 |
| 1004 | 24.0 | 56.0 | 20.0 | 18.995 | O | 136 |
| 1005 | 23.0 | 57.0 | 20.0 | 18.638 | O | 136 |
| 1006 | 22.0 | 58.0 | 20.0 | 18.282 | O | 136 |
| 1007 | 21.0 | 59.0 | 20.0 | 17.925 | O | 136 |
| 1008 | 20.0 | 60.0 | 20.0 | 17.568 | O | 136 |
| 1009 | 19.0 | 61.0 | 20.0 | 17.211 | O | 136 |
| 1010 | 18.0 | 62.0 | 20.0 | 16.854 | O | 136 |
| 1011 | 17.0 | 63.0 | 20.0 | 16.498 | O | 136 |
| 1012 | 16.0 | 64.0 | 20.0 | 16.141 | O | 136 |
| 1013 | 15.0 | 65.0 | 20.0 | 15.784 | O | 136 |
| 1014 | 14.0 | 66.0 | 20.0 | 15.427 | O | 136 |
| 1015 | 13.0 | 67.0 | 20.0 | 15.070 | O | 136 |
| 1016 | 12.0 | 68.0 | 20.0 | 14.713 | O | 136 |
| 1017 | 11.0 | 69.0 | 20.0 | 14.357 | O | 136 |
| 1018 | 10.0 | 70.0 | 20.0 | 14.000 | O | 136 |
| 1019 | 9.0 | 71.0 | 20.0 | 13.614 | O | 136 |
| 1020 | 8.0 | 72.0 | 20.0 | 13.196 | O | 136 |
| 1021 | 7.0 | 73.0 | 20.0 | 12.778 | O | 136 |
| 1022 | 6.0 | 74.0 | 20.0 | 12.360 | O | 136 |
| 1023 | 5.0 | 75.0 | 20.0 | 11.942 | O | 136 |
| 1024 | 4.0 | 76.0 | 20.0 | 11.524 | O | 136 |
| 1025 | 3.0 | 77.0 | 20.0 | 11.106 | O | 136 |
| 1026 | 2.0 | 78.0 | 20.0 | 10.688 | O | 136 |
| 1027 | 1.0 | 79.0 | 20.0 | 10.271 | O | 136 |
| 1028 | 0.0 | 80.0 | 20.0 | 9.853 | O | 136 |
| 1029 | 25.0 | 53.0 | 22.0 | 19.330 | X | 150 |
| 1030 | 24.1 | 53.9 | 22.0 | 19.009 | X | 150 |
| 1031 | 24.0 | 54.0 | 22.0 | 18.973 | O | 150 |
| 1032 | 23.0 | 55.0 | 22.0 | 18.616 | O | 150 |
| 1033 | 22.0 | 56.0 | 22.0 | 18.260 | O | 150 |
| 1034 | 21.0 | 57.0 | 22.0 | 17.903 | O | 150 |
| 1035 | 20.0 | 58.0 | 22.0 | 17.546 | O | 150 |
| 1036 | 19.0 | 59.0 | 22.0 | 17.189 | O | 150 |
| 1037 | 18.0 | 60.0 | 22.0 | 16.832 | O | 150 |
| 1038 | 17.0 | 61.0 | 22.0 | 16.475 | O | 150 |
| 1039 | 16.0 | 62.0 | 22.0 | 16.119 | O | 150 |
| 1040 | 15.0 | 63.0 | 22.0 | 15.762 | O | 150 |
| 1041 | 14.0 | 64.0 | 22.0 | 15.405 | O | 150 |
| 1042 | 13.0 | 65.0 | 22.0 | 15.048 | O | 150 |
| 1043 | 12.0 | 66.0 | 22.0 | 14.691 | O | 150 |

[Table 23]

| 1044 | 11.0 | 67.0 | 22.0 | 14.335 | O | 150 |
|------|------|------|------|--------|---|-----|
| 1045 | 10.0 | 68.0 | 22.0 | 13.978 | O | 150 |
| 1046 | 9.0 | 69.0 | 22.0 | 13.606 | O | 150 |
| 1047 | 8.0 | 70.0 | 22.0 | 13.188 | O | 150 |
| 1048 | 7.0 | 71.0 | 22.0 | 12.770 | O | 150 |
| 1049 | 6.0 | 72.0 | 22.0 | 12.352 | O | 150 |
| 1050 | 5.0 | 73.0 | 22.0 | 11.935 | O | 150 |
| 1051 | 4.0 | 74.0 | 22.0 | 11.517 | O | 150 |
| 1052 | 3.0 | 75.0 | 22.0 | 11.099 | O | 150 |
| 1053 | 2.0 | 76.0 | 22.0 | 10.681 | O | 150 |
| 1054 | 1.0 | 77.0 | 22.0 | 10.263 | O | 150 |
| 1055 | 0.0 | 78.0 | 22.0 | 9.845 | O | 150 |
| 1056 | 26.0 | 0.0 | 74.0 | 19.112 | X | 501 |
| 1057 | 25.7 | 0.0 | 74.3 | 19.002 | X | 503 |
| 1058 | 25.6 | 0.0 | 74.4 | 18.965 | O | 504 |
| 1059 | 25.0 | 0.0 | 75.0 | 18.744 | O | 508 |

Tables 24 to 26 show the composition, combustion heat amount, and GWP of the working medium of a three-component system of propane, HFO-1123, and $CO_2$.

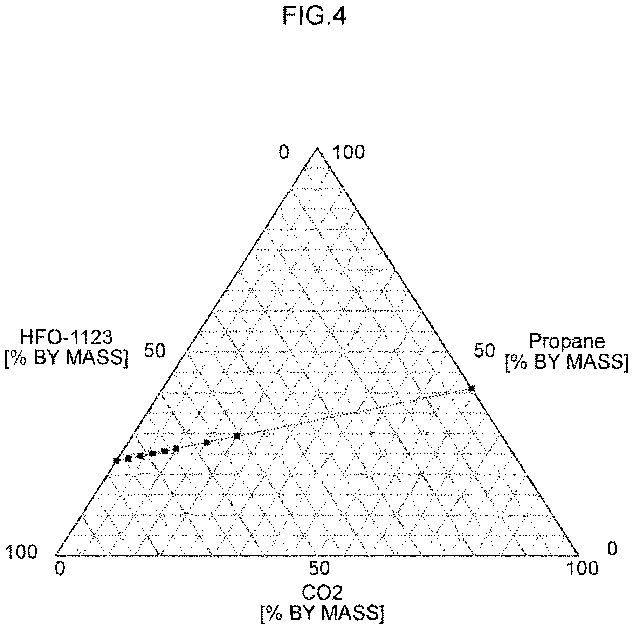

Fig. 4 shows a triangular diagram of a three-component system of propane, HFO-1123, and $CO_2$. Fig. 4 shows a straight line connecting (23.3, 76.7, 0) and (41.0, 0, 59.0) by (propane, HFO-1123, $CO_2$). A region including this straight line and having a low propane concentration indicates a region where the combustion heat amount for the three-component system of propane, HFO-1123, and $CO_2$ is less than 19.000 MJ/kg, and a region having a higher propane concentration than the straight line indicates a region where the combustion heat amount for the three-component system of propane, HFO-1123, and $CO_2$ is 19.000 MJ/kg or more.

The straight line in Fig. 4 is also expressed as follows:

in the case of (Propane, HFO-1123, $CO_2$) = (X, Y, Z),

(X, Y, Z) = (-0.230769Y+ 41.0, Y, 59.0 - 0.769231Y)

※ Y ≤ 76.7.

[Table 24]

| Case | propane | HFO-1123 | $CO_2$ | Heat of Combustion | Evaluation | GWP |
|---|---|---|---|---|---|---|
| 1060 | 24.0 | 74.0 | 2.0 | 19.003 | X | 1 |
| 1061 | 23.9 | 74.1 | 2.0 | 18.968 | O | 1 |
| 1062 | 23.0 | 75.0 | 2.0 | 18.646 | O | 1 |
| 1063 | 22.0 | 76.0 | 2.0 | 18.290 | O | 1 |
| 1064 | 21.0 | 77.0 | 2.0 | 17.933 | O | 1 |
| 1065 | 20.0 | 78.0 | 2.0 | 17.576 | O | 1 |
| 1066 | 19.0 | 79.0 | 2.0 | 17.219 | O | 1 |
| 1067 | 18.0 | 80.0 | 2.0 | 16.862 | O | 1 |
| 1068 | 17.0 | 81.0 | 2.0 | 16.506 | O | 1 |
| 1069 | 16.0 | 82.0 | 2.0 | 16.149 | O | 1 |
| 1070 | 15.0 | 83.0 | 2.0 | 15.792 | O | 1 |
| 1071 | 14.0 | 84.0 | 2.0 | 15.435 | O | 1 |
| 1072 | 13.0 | 85.0 | 2.0 | 15.078 | O | 1 |
| 1073 | 12.0 | 86.0 | 2.0 | 14.721 | O | 1 |
| 1074 | 11.0 | 87.0 | 2.0 | 14.327 | O | 1 |
| 1075 | 10.0 | 88.0 | 2.0 | 13.909 | O | 1 |
| 1076 | 9.0 | 89.0 | 2.0 | 13.491 | O | 1 |
| 1077 | 8.0 | 90.0 | 2.0 | 13.074 | O | 1 |
| 1078 | 7.0 | 91.0 | 2.0 | 12.656 | O | 1 |
| 1079 | 6.0 | 92.0 | 2.0 | 12.238 | O | 1 |
| 1080 | 5.0 | 93.0 | 2.0 | 11.820 | O | 1 |
| 1081 | 4.0 | 94.0 | 2.0 | 11.402 | O | 1 |
| 1082 | 3.0 | 95.0 | 2.0 | 10.984 | O | 1 |
| 1083 | 2.0 | 96.0 | 2.0 | 10.566 | O | 1 |
| 1084 | 1.0 | 97.0 | 2.0 | 10.148 | O | 1 |
| 1085 | 0.0 | 98.0 | 2.0 | 9.730 | O | 1 |
| 1086 | 25.0 | 71.0 | 4.0 | 19.147 | X | 1 |
| 1087 | 24.6 | 71.4 | 4.0 | 19.004 | X | 1 |
| 1088 | 24.5 | 71.5 | 4.0 | 18.969 | O | 1 |
| 1089 | 24.0 | 72.0 | 4.0 | 18.790 | O | 1 |
| 1090 | 23.0 | 73.0 | 4.0 | 18.433 | O | 1 |
| 1091 | 22.0 | 74.0 | 4.0 | 18.077 | O | 1 |
| 1092 | 21.0 | 75.0 | 4.0 | 17.720 | O | 1 |
| 1093 | 20.0 | 76.0 | 4.0 | 17.363 | O | 1 |
| 1094 | 19.0 | 77.0 | 4.0 | 17.006 | O | 1 |
| 1095 | 18.0 | 78.0 | 4.0 | 16.649 | O | 1 |
| 1096 | 17.0 | 79.0 | 4.0 | 16.292 | O | 1 |
| 1097 | 16.0 | 80.0 | 4.0 | 15.936 | O | 1 |
| 1098 | 15.0 | 81.0 | 4.0 | 15.579 | O | 1 |
| 1099 | 14.0 | 82.0 | 4.0 | 15.222 | O | 1 |
| 1100 | 13.0 | 83.0 | 4.0 | 14.865 | O | 1 |
| 1101 | 12.0 | 84.0 | 4.0 | 14.508 | O | 1 |
| 1102 | 11.0 | 85.0 | 4.0 | 14.129 | O | 1 |
| 1103 | 10.0 | 86.0 | 4.0 | 13.711 | O | 1 |
| 1104 | 9.0 | 87.0 | 4.0 | 13.293 | O | 1 |
| 1105 | 8.0 | 88.0 | 4.0 | 12.875 | O | 1 |
| 1106 | 7.0 | 89.0 | 4.0 | 12.457 | O | 1 |
| 1107 | 6.0 | 90.0 | 4.0 | 12.039 | O | 1 |
| 1108 | 5.0 | 91.0 | 4.0 | 11.621 | O | 1 |
| 1109 | 4.0 | 92.0 | 4.0 | 11.203 | O | 1 |

[Table 25]

| 1110 | 3.0 | 93.0 | 4.0 | 10.785 | O | 1 |
|------|------|------|-----|--------|---|---|
| 1111 | 2.0 | 94.0 | 4.0 | 10.367 | O | 1 |
| 1112 | 1.0 | 95.0 | 4.0 | 9.950 | O | 1 |
| 1113 | 0.0 | 96.0 | 4.0 | 9.532 | O | 1 |
| 1114 | 26.0 | 68.0 | 6.0 | 19.291 | X | 1 |
| 1115 | 25.2 | 68.8 | 6.0 | 19.005 | X | 1 |
| 1116 | 25.1 | 68.9 | 6.0 | 18.970 | O | 1 |
| 1117 | 25.0 | 69.0 | 6.0 | 18.934 | O | 1 |
| 1118 | 24.0 | 70.0 | 6.0 | 18.577 | O | 1 |
| 1119 | 23.0 | 71.0 | 6.0 | 18.220 | O | 1 |
| 1120 | 22.0 | 72.0 | 6.0 | 17.863 | O | 1 |
| 1121 | 21.0 | 73.0 | 6.0 | 17.507 | O | 1 |
| 1122 | 20.0 | 74.0 | 6.0 | 17.150 | O | 1 |
| 1123 | 19.0 | 75.0 | 6.0 | 16.793 | O | 1 |
| 1124 | 18.0 | 76.0 | 6.0 | 16.436 | O | 1 |
| 1125 | 17.0 | 77.0 | 6.0 | 16.079 | O | 1 |
| 1126 | 16.0 | 78.0 | 6.0 | 15.723 | O | 1 |
| 1127 | 15.0 | 79.0 | 6.0 | 15.366 | O | 1 |
| 1128 | 14.0 | 80.0 | 6.0 | 15.009 | O | 1 |
| 1129 | 13.0 | 81.0 | 6.0 | 14.652 | O | 1 |
| 1130 | 12.0 | 82.0 | 6.0 | 14.295 | O | 1 |
| 1131 | 11.0 | 83.0 | 6.0 | 13.930 | O | 1 |
| 1132 | 10.0 | 84.0 | 6.0 | 13.512 | O | 1 |
| 1133 | 9.0 | 85.0 | 6.0 | 13.094 | O | 1 |
| 1134 | 8.0 | 86.0 | 6.0 | 12.676 | O | 1 |
| 1135 | 7.0 | 87.0 | 6.0 | 12.258 | O | 1 |
| 1136 | 6.0 | 88.0 | 6.0 | 11.841 | O | 1 |
| 1137 | 5.0 | 89.0 | 6.0 | 11.423 | O | 1 |
| 1138 | 4.0 | 90.0 | 6.0 | 11.005 | O | 1 |
| 1139 | 3.0 | 91.0 | 6.0 | 10.587 | O | 1 |
| 1140 | 2.0 | 92.0 | 6.0 | 10.169 | O | 1 |
| 1141 | 1.0 | 93.0 | 6.0 | 9.751 | O | 1 |
| 1142 | 0.0 | 94.0 | 6.0 | 9.333 | O | 1 |
| 1143 | 26.0 | 66.0 | 8.0 | 19.078 | X | 1 |
| 1144 | 25.8 | 66.2 | 8.0 | 19.006 | X | 1 |
| 1145 | 25.7 | 66.3 | 8.0 | 18.971 | O | 1 |
| 1146 | 25.0 | 67.0 | 8.0 | 18.721 | O | 1 |
| 1147 | 24.0 | 68.0 | 8.0 | 18.364 | O | 1 |
| 1148 | 23.0 | 69.0 | 8.0 | 18.007 | O | 1 |
| 1149 | 22.0 | 70.0 | 8.0 | 17.650 | O | 1 |
| 1150 | 21.0 | 71.0 | 8.0 | 17.294 | O | 1 |
| 1151 | 20.0 | 72.0 | 8.0 | 16.937 | O | 1 |
| 1152 | 19.0 | 73.0 | 8.0 | 16.580 | O | 1 |
| 1153 | 18.0 | 74.0 | 8.0 | 16.223 | O | 1 |
| 1154 | 17.0 | 75.0 | 8.0 | 15.866 | O | 1 |
| 1155 | 16.0 | 76.0 | 8.0 | 15.510 | O | 1 |
| 1156 | 15.0 | 77.0 | 8.0 | 15.153 | O | 1 |
| 1157 | 14.0 | 78.0 | 8.0 | 14.796 | O | 1 |
| 1158 | 13.0 | 79.0 | 8.0 | 14.439 | O | 1 |
| 1159 | 12.0 | 80.0 | 8.0 | 14.082 | O | 1 |

[Table 26]

| 1160 | 11.0 | 81.0 | 8.0 | 13.725 | O | 1 |
|---|---|---|---|---|---|---|
| 1161 | 10.0 | 82.0 | 8.0 | 13.314 | O | 1 |
| 1162 | 9.0 | 83.0 | 8.0 | 12.896 | O | 1 |
| 1163 | 8.0 | 84.0 | 8.0 | 12.478 | O | 1 |
| 1164 | 7.0 | 85.0 | 8.0 | 12.060 | O | 1 |
| 1165 | 6.0 | 86.0 | 8.0 | 11.642 | O | 1 |
| 1166 | 5.0 | 87.0 | 8.0 | 11.224 | O | 1 |
| 1167 | 4.0 | 88.0 | 8.0 | 10.806 | O | 1 |
| 1168 | 3.0 | 89.0 | 8.0 | 10.388 | O | 1 |
| 1169 | 2.0 | 90.0 | 8.0 | 9.970 | O | 1 |
| 1170 | 1.0 | 91.0 | 8.0 | 9.552 | O | 1 |
| 1171 | 0.0 | 92.0 | 8.0 | 9.134 | O | 1 |
| 1172 | 27.0 | 63.0 | 10.0 | 19.221 | X | 1 |
| 1173 | 26.4 | 63.6 | 10.0 | 19.007 | X | 1 |
| 1174 | 26.3 | 63.7 | 10.0 | 18.972 | O | 1 |
| 1175 | 26.0 | 64.0 | 10.0 | 18.865 | O | 1 |
| 1176 | 25.0 | 65.0 | 10.0 | 18.508 | O | 1 |
| 1177 | 24.0 | 66.0 | 10.0 | 18.151 | O | 1 |
| 1178 | 23.0 | 67.0 | 10.0 | 17.794 | O | 1 |
| 1179 | 22.0 | 68.0 | 10.0 | 17.437 | O | 1 |
| 1180 | 21.0 | 69.0 | 10.0 | 17.081 | O | 1 |
| 1181 | 20.0 | 70.0 | 10.0 | 16.724 | O | 1 |
| 1182 | 19.0 | 71.0 | 10.0 | 16.367 | O | 1 |
| 1183 | 18.0 | 72.0 | 10.0 | 16.010 | O | 1 |
| 1184 | 17.0 | 73.0 | 10.0 | 15.653 | O | 1 |
| 1185 | 16.0 | 74.0 | 10.0 | 15.296 | O | 1 |
| 1186 | 15.0 | 75.0 | 10.0 | 14.940 | O | 1 |
| 1187 | 14.0 | 76.0 | 10.0 | 14.583 | O | 1 |
| 1188 | 13.0 | 77.0 | 10.0 | 14.226 | O | 1 |
| 1189 | 12.0 | 78.0 | 10.0 | 13.869 | O | 1 |
| 1190 | 11.0 | 79.0 | 10.0 | 13.512 | O | 1 |
| 1191 | 10.0 | 80.0 | 10.0 | 13.115 | O | 1 |
| 1192 | 9.0 | 81.0 | 10.0 | 12.697 | O | 1 |
| 1193 | 8.0 | 82.0 | 10.0 | 12.279 | O | 1 |
| 1194 | 7.0 | 83.0 | 10.0 | 11.861 | O | 1 |
| 1195 | 6.0 | 84.0 | 10.0 | 11.443 | O | 1 |
| 1196 | 5.0 | 85.0 | 10.0 | 11.026 | O | 1 |
| 1197 | 4.0 | 86.0 | 10.0 | 10.608 | O | 1 |
| 1198 | 3.0 | 87.0 | 10.0 | 10.190 | O | 1 |
| 1199 | 2.0 | 88.0 | 10.0 | 9.772 | O | 1 |
| 1200 | 1.0 | 89.0 | 10.0 | 9.354 | O | 1 |
| 1201 | 0.0 | 90.0 | 10.0 | 8.936 | O | 1 |
| 1266 | 42.0 | 0.0 | 58.0 | 19.460 | X | 1 |
| 1267 | 41.1 | 0.0 | 58.9 | 19.043 | X | 1 |
| 1268 | 41.0 | 0.0 | 59.0 | 18.997 | O | 1 |

Tables 27 to 35 show the composition, combustion heat amount, and GWP of the working medium of a three-component system of propane, HFO-1123, and $CF_3I$.

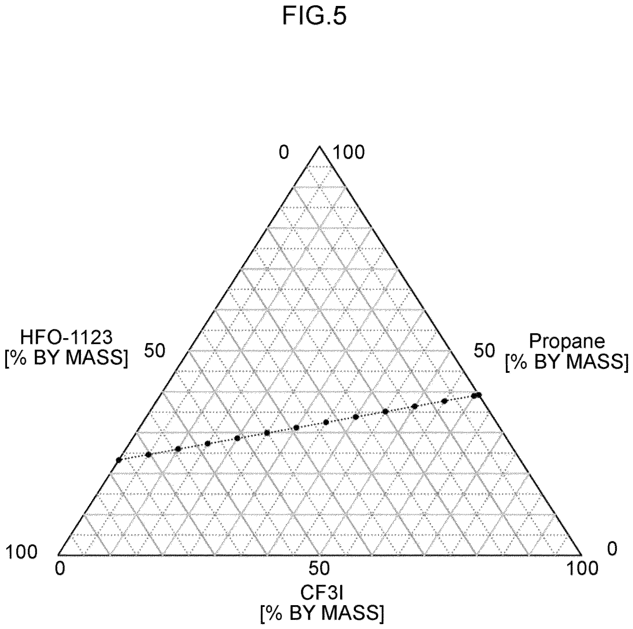

Fig. 5 shows a triangular diagram of a three-component system of propane, HFO-1123, and $CF_3I$. Fig. 5 shows a straight line connecting (23.3, 76.7, 0.0) and (39.2, 0.0, 60.8) by (propane, HFO-1123, $CF_3I$). A region including this straight line and having a low propane concentration indicates a region where the combustion heat amount for the three-component system of propane, HFO-1123, and $CF_3I$ is less than 19.000 MJ/kg, and a region having a higher propane concentration than the straight line indicates a region where the combustion heat amount for the three-component system of propane, HFO-1123, and $CF_3I$ is 19.000 MJ/kg or more.

The straight line in Fig. 5 is also expressed as follows:

in the case of (Propane, HFO-1123, $CF_3I$) = (X, Y, Z),
(X, Y, Z) = (-0.206665Y + 39.2, Y, 60.8 - 0.793335Y)

※ Y ≤ 76.7.

[Table 27]

| Case | propane | HFO-1123 | CF₃I | Heat of Combustion | Evaluation | GWP |
|------|---------|----------|------|--------------------|------------|-----|
| 1269 | 25.0 | 70.0 | 5.0 | 19.107 | X | 1 |
| 1270 | 24.7 | 70.3 | 5.0 | 19.000 | **X** | 1 |
| 1271 | 24.6 | 70.4 | 5.0 | 18.964 | O | 1 |
| 1272 | 24.0 | 71.0 | 5.0 | 18.750 | O | 1 |
| 1273 | 23.0 | 72.0 | 5.0 | 18.393 | O | 1 |
| 1274 | 22.0 | 73.0 | 5.0 | 18.037 | O | 1 |
| 1275 | 21.0 | 74.0 | 5.0 | 17.680 | O | 1 |
| 1276 | 20.0 | 75.0 | 5.0 | 17.323 | O | 1 |
| 1277 | 19.0 | 76.0 | 5.0 | 16.966 | O | 1 |
| 1278 | 18.0 | 77.0 | 5.0 | 16.609 | O | 1 |
| 1279 | 17.0 | 78.0 | 5.0 | 16.252 | O | 1 |
| 1280 | 16.0 | 79.0 | 5.0 | 15.896 | O | 1 |
| 1281 | 15.0 | 80.0 | 5.0 | 15.539 | O | 1 |
| 1282 | 14.0 | 81.0 | 5.0 | 15.182 | O | 1 |
| 1283 | 13.0 | 82.0 | 5.0 | 14.825 | O | 1 |
| 1284 | 12.0 | 83.0 | 5.0 | 14.468 | O | 1 |
| 1285 | 11.0 | 84.0 | 5.0 | 14.073 | O | 1 |
| 1286 | 10.0 | 85.0 | 5.0 | 13.655 | O | 1 |
| 1287 | 9.0 | 86.0 | 5.0 | 13.237 | O | 1 |
| 1288 | 8.0 | 87.0 | 5.0 | 12.820 | O | 1 |
| 1289 | 7.0 | 88.0 | 5.0 | 12.402 | O | 1 |
| 1290 | 6.0 | 89.0 | 5.0 | 11.984 | O | 1 |
| 1291 | 5.0 | 90.0 | 5.0 | 11.566 | O | 1 |
| 1292 | 4.0 | 91.0 | 5.0 | 11.148 | O | 1 |
| 1293 | 3.0 | 92.0 | 5.0 | 10.730 | O | 1 |
| 1294 | 2.0 | 93.0 | 5.0 | 10.312 | O | 1 |
| 1295 | 1.0 | 94.0 | 5.0 | 9.894 | O | 1 |
| 1296 | 0.0 | 95.0 | 5.0 | 9.476 | O | 1 |
| 1297 | 27.0 | 63.0 | 10.0 | 19.355 | X | 1 |
| 1298 | 26.1 | 63.9 | 10.0 | 19.033 | X | 1 |
| 1299 | 26.0 | 64.0 | 10.0 | 18.998 | O | 1 |
| 1300 | 25.0 | 65.0 | 10.0 | 18.641 | O | 1 |
| 1301 | 24.0 | 66.0 | 10.0 | 18.284 | O | 1 |
| 1302 | 23.0 | 67.0 | 10.0 | 17.927 | O | 1 |
| 1303 | 22.0 | 68.0 | 10.0 | 17.570 | O | 1 |
| 1304 | 21.0 | 69.0 | 10.0 | 17.214 | O | 1 |
| 1305 | 20.0 | 70.0 | 10.0 | 16.857 | O | 1 |
| 1306 | 19.0 | 71.0 | 10.0 | 16.500 | O | 1 |
| 1307 | 18.0 | 72.0 | 10.0 | 16.143 | O | 1 |
| 1308 | 17.0 | 73.0 | 10.0 | 15.786 | O | 1 |
| 1309 | 16.0 | 74.0 | 10.0 | 15.430 | O | 1 |
| 1310 | 15.0 | 75.0 | 10.0 | 15.073 | O | 1 |
| 1311 | 14.0 | 76.0 | 10.0 | 14.716 | O | 1 |
| 1312 | 13.0 | 77.0 | 10.0 | 14.359 | O | 1 |
| 1313 | 12.0 | 78.0 | 10.0 | 14.002 | O | 1 |
| 1314 | 11.0 | 79.0 | 10.0 | 13.621 | O | 1 |
| 1315 | 10.0 | 80.0 | 10.0 | 13.203 | O | 1 |
| 1316 | 9.0 | 81.0 | 10.0 | 12.785 | O | 1 |
| 1317 | 8.0 | 82.0 | 10.0 | 12.367 | O | 1 |
| 1318 | 7.0 | 83.0 | 10.0 | 11.949 | O | 1 |

[Table 28]

| 1319 | 6.0 | 84.0 | 10.0 | 11.531 | O | 1 |
|------|------|------|------|--------|---|---|
| 1320 | 5.0 | 85.0 | 10.0 | 11.113 | O | 1 |
| 1321 | 4.0 | 86.0 | 10.0 | 10.695 | O | 1 |
| 1322 | 3.0 | 87.0 | 10.0 | 10.277 | O | 1 |
| 1323 | 2.0 | 88.0 | 10.0 | 9.859 | O | 1 |
| 1324 | 1.0 | 89.0 | 10.0 | 9.441 | O | 1 |
| 1325 | 0.0 | 90.0 | 10.0 | 9.024 | O | 1 |
| 1326 | 28.0 | 57.0 | 15.0 | 19.245 | X | 1 |
| 1327 | 27.4 | 57.6 | 15.0 | 19.031 | X | 1 |
| 1328 | 27.3 | 57.7 | 15.0 | 18.995 | O | 1 |
| 1329 | 27.0 | 58.0 | 15.0 | 18.888 | O | 1 |
| 1330 | 26.0 | 59.0 | 15.0 | 18.532 | O | 1 |
| 1331 | 25.0 | 60.0 | 15.0 | 18.175 | O | 1 |
| 1332 | 24.0 | 61.0 | 15.0 | 17.818 | O | 1 |
| 1333 | 23.0 | 62.0 | 15.0 | 17.461 | O | 1 |
| 1334 | 22.0 | 63.0 | 15.0 | 17.104 | O | 1 |
| 1335 | 21.0 | 64.0 | 15.0 | 16.748 | O | 1 |
| 1336 | 20.0 | 65.0 | 15.0 | 16.391 | O | 1 |
| 1337 | 19.0 | 66.0 | 15.0 | 16.034 | O | 1 |
| 1338 | 18.0 | 67.0 | 15.0 | 15.677 | O | 1 |
| 1339 | 17.0 | 68.0 | 15.0 | 15.320 | O | 1 |
| 1340 | 16.0 | 69.0 | 15.0 | 14.963 | O | 1 |
| 1341 | 15.0 | 70.0 | 15.0 | 14.607 | O | 1 |
| 1342 | 14.0 | 71.0 | 15.0 | 14.250 | O | 1 |
| 1343 | 13.0 | 72.0 | 15.0 | 13.893 | O | 1 |
| 1344 | 12.0 | 73.0 | 15.0 | 13.536 | O | 1 |
| 1345 | 11.0 | 74.0 | 15.0 | 13.168 | O | 1 |
| 1346 | 10.0 | 75.0 | 15.0 | 12.750 | O | 1 |
| 1347 | 9.0 | 76.0 | 15.0 | 12.332 | O | 1 |
| 1348 | 8.0 | 77.0 | 15.0 | 11.914 | O | 1 |
| 1349 | 7.0 | 78.0 | 15.0 | 11.496 | O | 1 |
| 1350 | 6.0 | 79.0 | 15.0 | 11.078 | O | 1 |
| 1351 | 5.0 | 80.0 | 15.0 | 10.660 | O | 1 |
| 1352 | 4.0 | 81.0 | 15.0 | 10.243 | O | 1 |
| 1353 | 3.0 | 82.0 | 15.0 | 9.825 | O | 1 |
| 1354 | 2.0 | 83.0 | 15.0 | 9.407 | O | 1 |
| 1355 | 1.0 | 84.0 | 15.0 | 8.989 | O | 1 |
| 1356 | 0.0 | 85.0 | 15.0 | 8.571 | O | 1 |
| 1357 | 29.0 | 51.0 | 20.0 | 19.136 | X | 1 |
| 1358 | 28.7 | 51.3 | 20.0 | 19.029 | X | 1 |
| 1359 | 28.6 | 51.4 | 20.0 | 18.993 | O | 1 |
| 1360 | 28.0 | 52.0 | 20.0 | 18.779 | O | 1 |
| 1361 | 27.0 | 53.0 | 20.0 | 18.422 | O | 1 |
| 1362 | 26.0 | 54.0 | 20.0 | 18.066 | O | 1 |
| 1363 | 25.0 | 55.0 | 20.0 | 17.709 | O | 1 |
| 1364 | 24.0 | 56.0 | 20.0 | 17.352 | O | 1 |
| 1365 | 23.0 | 57.0 | 20.0 | 16.995 | O | 1 |
| 1366 | 22.0 | 58.0 | 20.0 | 16.638 | O | 1 |
| 1367 | 21.0 | 59.0 | 20.0 | 16.281 | O | 1 |
| 1368 | 20.0 | 60.0 | 20.0 | 15.925 | O | 1 |

[Table 29]

| 1369 | 19.0 | 61.0 | 20.0 | 15.568 | O | 1 |
|---|---|---|---|---|---|---|
| 1370 | 18.0 | 62.0 | 20.0 | 15.211 | O | 1 |
| 1371 | 17.0 | 63.0 | 20.0 | 14.854 | O | 1 |
| 1372 | 16.0 | 64.0 | 20.0 | 14.497 | O | 1 |
| 1373 | 15.0 | 65.0 | 20.0 | 14.141 | O | 1 |
| 1374 | 14.0 | 66.0 | 20.0 | 13.784 | O | 1 |
| 1375 | 13.0 | 67.0 | 20.0 | 13.427 | O | 1 |
| 1376 | 12.0 | 68.0 | 20.0 | 13.070 | O | 1 |
| 1377 | 11.0 | 69.0 | 20.0 | 12.713 | O | 1 |
| 1378 | 10.0 | 70.0 | 20.0 | 12.297 | O | 1 |
| 1379 | 9.0 | 71.0 | 20.0 | 11.880 | O | 1 |
| 1380 | 8.0 | 72.0 | 20.0 | 11.462 | O | 1 |
| 1381 | 7.0 | 73.0 | 20.0 | 11.044 | O | 1 |
| 1382 | 6.0 | 74.0 | 20.0 | 10.626 | O | 1 |
| 1383 | 5.0 | 75.0 | 20.0 | 10.208 | O | 1 |
| 1384 | 4.0 | 76.0 | 20.0 | 9.790 | O | 1 |
| 1385 | 3.0 | 77.0 | 20.0 | 9.372 | O | 1 |
| 1386 | 2.0 | 78.0 | 20.0 | 8.954 | O | 1 |
| 1387 | 1.0 | 79.0 | 20.0 | 8.536 | O | 1 |
| 1388 | 0.0 | 80.0 | 20.0 | 8.118 | O | 1 |
| 1389 | 30.0 | 45.0 | 25.0 | 19.027 | X | 1 |
| 1390 | 29.9 | 45.1 | 25.0 | 18.991 | O | 1 |
| 1391 | 29.0 | 46.0 | 25.0 | 18.670 | O | 1 |
| 1392 | 28.0 | 47.0 | 25.0 | 18.313 | O | 1 |
| 1393 | 27.0 | 48.0 | 25.0 | 17.956 | O | 1 |
| 1394 | 26.0 | 49.0 | 25.0 | 17.599 | O | 1 |
| 1395 | 25.0 | 50.0 | 25.0 | 17.243 | O | 1 |
| 1396 | 24.0 | 51.0 | 25.0 | 16.886 | O | 1 |
| 1397 | 23.0 | 52.0 | 25.0 | 16.529 | O | 1 |
| 1398 | 22.0 | 53.0 | 25.0 | 16.172 | O | 1 |
| 1399 | 21.0 | 54.0 | 25.0 | 15.815 | O | 1 |
| 1400 | 20.0 | 55.0 | 25.0 | 15.459 | O | 1 |
| 1401 | 19.0 | 56.0 | 25.0 | 15.102 | O | 1 |
| 1402 | 18.0 | 57.0 | 25.0 | 14.745 | O | 1 |
| 1403 | 17.0 | 58.0 | 25.0 | 14.388 | O | 1 |
| 1404 | 16.0 | 59.0 | 25.0 | 14.031 | O | 1 |
| 1405 | 15.0 | 60.0 | 25.0 | 13.674 | O | 1 |
| 1406 | 14.0 | 61.0 | 25.0 | 13.318 | O | 1 |
| 1407 | 13.0 | 62.0 | 25.0 | 12.961 | O | 1 |
| 1408 | 12.0 | 63.0 | 25.0 | 12.604 | O | 1 |
| 1409 | 11.0 | 64.0 | 25.0 | 12.247 | O | 1 |
| 1410 | 10.0 | 65.0 | 25.0 | 11.845 | O | 1 |
| 1411 | 9.0 | 66.0 | 25.0 | 11.427 | O | 1 |
| 1412 | 8.0 | 67.0 | 25.0 | 11.009 | O | 1 |
| 1413 | 7.0 | 68.0 | 25.0 | 10.591 | O | 1 |
| 1414 | 6.0 | 69.0 | 25.0 | 10.173 | O | 1 |
| 1415 | 5.0 | 70.0 | 25.0 | 9.755 | O | 1 |
| 1416 | 4.0 | 71.0 | 25.0 | 9.337 | O | 1 |
| 1417 | 3.0 | 72.0 | 25.0 | 8.919 | O | 1 |
| 1418 | 2.0 | 73.0 | 25.0 | 8.501 | O | 1 |

[Table 30]

| 1419 | 1.0 | 74.0 | 25.0 | 8.084 | O | 1 |
|------|------|------|------|--------|---|---|
| 1420 | 0.0 | 75.0 | 25.0 | 7.666 | O | 1 |
| 1421 | 32.0 | 38.0 | 30.0 | 19.274 | X | 1 |
| 1422 | 31.3 | 38.7 | 30.0 | 19.024 | X | 1 |
| 1423 | 31.2 | 38.8 | 30.0 | 18.989 | O | 1 |
| 1424 | 31.0 | 39.0 | 30.0 | 18.917 | O | 1 |
| 1425 | 30.0 | 40.0 | 30.0 | 18.561 | O | 1 |
| 1426 | 29.0 | 41.0 | 30.0 | 18.204 | O | 1 |
| 1427 | 28.0 | 42.0 | 30.0 | 17.847 | O | 1 |
| 1428 | 27.0 | 43.0 | 30.0 | 17.490 | O | 1 |
| 1429 | 26.0 | 44.0 | 30.0 | 17.133 | O | 1 |
| 1430 | 25.0 | 45.0 | 30.0 | 16.777 | O | 1 |
| 1431 | 24.0 | 46.0 | 30.0 | 16.420 | O | 1 |
| 1432 | 23.0 | 47.0 | 30.0 | 16.063 | O | 1 |
| 1433 | 22.0 | 48.0 | 30.0 | 15.706 | O | 1 |
| 1434 | 21.0 | 49.0 | 30.0 | 15.349 | O | 1 |
| 1435 | 20.0 | 50.0 | 30.0 | 14.992 | O | 1 |
| 1436 | 19.0 | 51.0 | 30.0 | 14.636 | O | 1 |
| 1437 | 18.0 | 52.0 | 30.0 | 14.279 | O | 1 |
| 1438 | 17.0 | 53.0 | 30.0 | 13.922 | O | 1 |
| 1439 | 16.0 | 54.0 | 30.0 | 13.565 | O | 1 |
| 1440 | 15.0 | 55.0 | 30.0 | 13.208 | O | 1 |
| 1441 | 14.0 | 56.0 | 30.0 | 12.852 | O | 1 |
| 1442 | 13.0 | 57.0 | 30.0 | 12.495 | O | 1 |
| 1443 | 12.0 | 58.0 | 30.0 | 12.138 | O | 1 |
| 1444 | 11.0 | 59.0 | 30.0 | 11.781 | O | 1 |
| 1445 | 10.0 | 60.0 | 30.0 | 11.392 | O | 1 |
| 1446 | 9.0 | 61.0 | 30.0 | 10.974 | O | 1 |
| 1447 | 8.0 | 62.0 | 30.0 | 10.556 | O | 1 |
| 1448 | 7.0 | 63.0 | 30.0 | 10.138 | O | 1 |
| 1449 | 6.0 | 64.0 | 30.0 | 9.721 | O | 1 |
| 1450 | 5.0 | 65.0 | 30.0 | 9.303 | O | 1 |
| 1451 | 4.0 | 66.0 | 30.0 | 8.885 | O | 1 |
| 1452 | 3.0 | 67.0 | 30.0 | 8.467 | O | 1 |
| 1453 | 2.0 | 68.0 | 30.0 | 8.049 | O | 1 |
| 1454 | 1.0 | 69.0 | 30.0 | 7.631 | O | 1 |
| 1455 | 0.0 | 70.0 | 30.0 | 7.213 | O | 1 |
| 1456 | 33.0 | 32.0 | 35.0 | 19.165 | X | 1 |
| 1457 | 32.6 | 32.4 | 35.0 | 19.022 | X | 1 |
| 1458 | 32.5 | 32.5 | 35.0 | 18.987 | O | 1 |
| 1459 | 32.0 | 33.0 | 35.0 | 18.808 | O | 1 |
| 1460 | 31.0 | 34.0 | 35.0 | 18.451 | O | 1 |
| 1461 | 30.0 | 35.0 | 35.0 | 18.094 | O | 1 |
| 1462 | 29.0 | 36.0 | 35.0 | 17.738 | O | 1 |
| 1463 | 28.0 | 37.0 | 35.0 | 17.381 | O | 1 |
| 1464 | 27.0 | 38.0 | 35.0 | 17.024 | O | 1 |
| 1465 | 26.0 | 39.0 | 35.0 | 16.667 | O | 1 |
| 1466 | 25.0 | 40.0 | 35.0 | 16.310 | O | 1 |
| 1467 | 24.0 | 41.0 | 35.0 | 15.954 | O | 1 |
| 1468 | 23.0 | 42.0 | 35.0 | 15.597 | O | 1 |

[Table 31]

| 1469 | 22.0 | 43.0 | 35.0 | 15.240 | O | 1 |
|------|------|------|------|--------|---|---|
| 1470 | 21.0 | 44.0 | 35.0 | 14.883 | O | 1 |
| 1471 | 20.0 | 45.0 | 35.0 | 14.526 | O | 1 |
| 1472 | 19.0 | 46.0 | 35.0 | 14.170 | O | 1 |
| 1473 | 18.0 | 47.0 | 35.0 | 13.813 | O | 1 |
| 1474 | 17.0 | 48.0 | 35.0 | 13.456 | O | 1 |
| 1475 | 16.0 | 49.0 | 35.0 | 13.099 | O | 1 |
| 1476 | 15.0 | 50.0 | 35.0 | 12.742 | O | 1 |
| 1477 | 14.0 | 51.0 | 35.0 | 12.385 | O | 1 |
| 1478 | 13.0 | 52.0 | 35.0 | 12.029 | O | 1 |
| 1479 | 12.0 | 53.0 | 35.0 | 11.672 | O | 1 |
| 1480 | 11.0 | 54.0 | 35.0 | 11.315 | O | 1 |
| 1481 | 10.0 | 55.0 | 35.0 | 10.940 | O | 1 |
| 1482 | 9.0 | 56.0 | 35.0 | 10.522 | O | 1 |
| 1483 | 8.0 | 57.0 | 35.0 | 10.104 | O | 1 |
| 1484 | 7.0 | 58.0 | 35.0 | 9.686 | O | 1 |
| 1485 | 6.0 | 59.0 | 35.0 | 9.268 | O | 1 |
| 1486 | 5.0 | 60.0 | 35.0 | 8.850 | O | 1 |
| 1487 | 4.0 | 61.0 | 35.0 | 8.432 | O | 1 |
| 1488 | 3.0 | 62.0 | 35.0 | 8.014 | O | 1 |
| 1489 | 2.0 | 63.0 | 35.0 | 7.596 | O | 1 |
| 1490 | 1.0 | 64.0 | 35.0 | 7.178 | O | 1 |
| 1491 | 0.0 | 65.0 | 35.0 | 6.760 | O | 1 |
| 1492 | 34.0 | 26.0 | 40.0 | 19.056 | X | 1 |
| 1493 | 33.9 | 26.1 | 40.0 | 19.020 | X | 1 |
| 1494 | 33.8 | 26.2 | 40.0 | 18.984 | O | 1 |
| 1495 | 33.0 | 27.0 | 40.0 | 18.699 | O | 1 |
| 1496 | 32.0 | 28.0 | 40.0 | 18.342 | O | 1 |
| 1497 | 31.0 | 29.0 | 40.0 | 17.985 | O | 1 |
| 1498 | 30.0 | 30.0 | 40.0 | 17.628 | O | 1 |
| 1499 | 29.0 | 31.0 | 40.0 | 17.272 | O | 1 |
| 1500 | 28.0 | 32.0 | 40.0 | 16.915 | O | 1 |
| 1501 | 27.0 | 33.0 | 40.0 | 16.558 | O | 1 |
| 1502 | 26.0 | 34.0 | 40.0 | 16.201 | O | 1 |
| 1503 | 25.0 | 35.0 | 40.0 | 15.844 | O | 1 |
| 1504 | 24.0 | 36.0 | 40.0 | 15.488 | O | 1 |
| 1505 | 23.0 | 37.0 | 40.0 | 15.131 | O | 1 |
| 1506 | 22.0 | 38.0 | 40.0 | 14.774 | O | 1 |
| 1507 | 21.0 | 39.0 | 40.0 | 14.417 | O | 1 |
| 1508 | 20.0 | 40.0 | 40.0 | 14.060 | O | 1 |
| 1509 | 19.0 | 41.0 | 40.0 | 13.703 | O | 1 |
| 1510 | 18.0 | 42.0 | 40.0 | 13.347 | O | 1 |
| 1511 | 17.0 | 43.0 | 40.0 | 12.990 | O | 1 |
| 1512 | 16.0 | 44.0 | 40.0 | 12.633 | O | 1 |
| 1513 | 15.0 | 45.0 | 40.0 | 12.276 | O | 1 |
| 1514 | 14.0 | 46.0 | 40.0 | 11.919 | O | 1 |
| 1515 | 13.0 | 47.0 | 40.0 | 11.563 | O | 1 |
| 1516 | 12.0 | 48.0 | 40.0 | 11.206 | O | 1 |
| 1517 | 11.0 | 49.0 | 40.0 | 10.849 | O | 1 |
| 1518 | 10.0 | 50.0 | 40.0 | 10.487 | O | 1 |

[Table 32]

| 1519 | 9.0 | 51.0 | 40.0 | 10.069 | O | 1 |
|------|-----|------|------|--------|---|---|
| 1520 | 8.0 | 52.0 | 40.0 | 9.651 | O | 1 |
| 1521 | 7.0 | 53.0 | 40.0 | 9.233 | O | 1 |
| 1522 | 6.0 | 54.0 | 40.0 | 8.815 | O | 1 |
| 1523 | 5.0 | 55.0 | 40.0 | 8.397 | O | 1 |
| 1524 | 4.0 | 56.0 | 40.0 | 7.979 | O | 1 |
| 1525 | 3.0 | 57.0 | 40.0 | 7.562 | O | 1 |
| 1526 | 2.0 | 58.0 | 40.0 | 7.144 | O | 1 |
| 1527 | 1.0 | 59.0 | 40.0 | 6.726 | O | 1 |
| 1528 | 0.0 | 60.0 | 40.0 | 6.308 | O | 1 |
| 1529 | 36.0 | 19.0 | 45.0 | 19.303 | X | 1 |
| 1530 | 35.2 | 19.8 | 45.0 | 19.018 | X | 1 |
| 1531 | 35.1 | 19.9 | 45.0 | 18.982 | O | 1 |
| 1532 | 35.0 | 20.0 | 45.0 | 18.946 | O | 1 |
| 1533 | 34.0 | 21.0 | 45.0 | 18.590 | O | 1 |
| 1534 | 33.0 | 22.0 | 45.0 | 18.233 | O | 1 |
| 1535 | 32.0 | 23.0 | 45.0 | 17.876 | O | 1 |
| 1536 | 31.0 | 24.0 | 45.0 | 17.519 | O | 1 |
| 1537 | 30.0 | 25.0 | 45.0 | 17.162 | O | 1 |
| 1538 | 29.0 | 26.0 | 45.0 | 16.805 | O | 1 |
| 1539 | 28.0 | 27.0 | 45.0 | 16.449 | O | 1 |
| 1540 | 27.0 | 28.0 | 45.0 | 16.092 | O | 1 |
| 1541 | 26.0 | 29.0 | 45.0 | 15.735 | O | 1 |
| 1542 | 25.0 | 30.0 | 45.0 | 15.378 | O | 1 |
| 1543 | 24.0 | 31.0 | 45.0 | 15.021 | O | 1 |
| 1544 | 23.0 | 32.0 | 45.0 | 14.665 | O | 1 |
| 1545 | 22.0 | 33.0 | 45.0 | 14.308 | O | 1 |
| 1546 | 21.0 | 34.0 | 45.0 | 13.951 | O | 1 |
| 1547 | 20.0 | 35.0 | 45.0 | 13.594 | O | 1 |
| 1548 | 19.0 | 36.0 | 45.0 | 13.237 | O | 1 |
| 1549 | 18.0 | 37.0 | 45.0 | 12.881 | O | 1 |
| 1550 | 17.0 | 38.0 | 45.0 | 12.524 | O | 1 |
| 1551 | 16.0 | 39.0 | 45.0 | 12.167 | O | 1 |
| 1552 | 15.0 | 40.0 | 45.0 | 11.810 | O | 1 |
| 1553 | 14.0 | 41.0 | 45.0 | 11.453 | O | 1 |
| 1554 | 13.0 | 42.0 | 45.0 | 11.096 | O | 1 |
| 1555 | 12.0 | 43.0 | 45.0 | 10.740 | O | 1 |
| 1556 | 11.0 | 44.0 | 45.0 | 10.383 | O | 1 |
| 1557 | 10.0 | 45.0 | 45.0 | 10.026 | O | 1 |
| 1558 | 9.0 | 46.0 | 45.0 | 9.616 | O | 1 |
| 1559 | 8.0 | 47.0 | 45.0 | 9.198 | O | 1 |
| 1560 | 7.0 | 48.0 | 45.0 | 8.781 | O | 1 |
| 1561 | 6.0 | 49.0 | 45.0 | 8.363 | O | 1 |
| 1562 | 5.0 | 50.0 | 45.0 | 7.945 | O | 1 |
| 1563 | 4.0 | 51.0 | 45.0 | 7.527 | O | 1 |
| 1564 | 3.0 | 52.0 | 45.0 | 7.109 | O | 1 |
| 1565 | 2.0 | 53.0 | 45.0 | 6.691 | O | 1 |
| 1566 | 1.0 | 54.0 | 45.0 | 6.273 | O | 1 |
| 1567 | 0.0 | 55.0 | 45.0 | 5.855 | O | 1 |
| 1568 | 37.0 | 13.0 | 50.0 | 19.194 | X | 1 |

[Table 33]

| 1569 | 36.5 | 13.5 | 50.0 | 19.015 | X | 1 |
|------|------|------|------|--------|---|---|
| 1570 | 36.4 | 13.6 | 50.0 | 18.980 | O | 1 |
| 1571 | 36.0 | 14.0 | 50.0 | 18.837 | O | 1 |
| 1572 | 35.0 | 15.0 | 50.0 | 18.480 | O | 1 |
| 1573 | 34.0 | 16.0 | 50.0 | 18.123 | O | 1 |
| 1574 | 33.0 | 17.0 | 50.0 | 17.767 | O | 1 |
| 1575 | 32.0 | 18.0 | 50.0 | 17.410 | O | 1 |
| 1576 | 31.0 | 19.0 | 50.0 | 17.053 | O | 1 |
| 1577 | 30.0 | 20.0 | 50.0 | 16.696 | O | 1 |
| 1578 | 29.0 | 21.0 | 50.0 | 16.339 | O | 1 |
| 1579 | 28.0 | 22.0 | 50.0 | 15.983 | O | 1 |
| 1580 | 27.0 | 23.0 | 50.0 | 15.626 | O | 1 |
| 1581 | 26.0 | 24.0 | 50.0 | 15.269 | O | 1 |
| 1582 | 25.0 | 25.0 | 50.0 | 14.912 | O | 1 |
| 1583 | 24.0 | 26.0 | 50.0 | 14.555 | O | 1 |
| 1584 | 23.0 | 27.0 | 50.0 | 14.198 | O | 1 |
| 1585 | 22.0 | 28.0 | 50.0 | 13.842 | O | 1 |
| 1586 | 21.0 | 29.0 | 50.0 | 13.485 | O | 1 |
| 1587 | 20.0 | 30.0 | 50.0 | 13.128 | O | 1 |
| 1588 | 19.0 | 31.0 | 50.0 | 12.771 | O | 1 |
| 1589 | 18.0 | 32.0 | 50.0 | 12.414 | O | 1 |
| 1590 | 17.0 | 33.0 | 50.0 | 12.058 | O | 1 |
| 1591 | 16.0 | 34.0 | 50.0 | 11.701 | O | 1 |
| 1592 | 15.0 | 35.0 | 50.0 | 11.344 | O | 1 |
| 1593 | 14.0 | 36.0 | 50.0 | 10.987 | O | 1 |
| 1594 | 13.0 | 37.0 | 50.0 | 10.630 | O | 1 |
| 1595 | 12.0 | 38.0 | 50.0 | 10.274 | O | 1 |
| 1596 | 11.0 | 39.0 | 50.0 | 9.917 | O | 1 |
| 1597 | 10.0 | 40.0 | 50.0 | 9.560 | O | 1 |
| 1598 | 9.0 | 41.0 | 50.0 | 9.164 | O | 1 |
| 1599 | 8.0 | 42.0 | 50.0 | 8.746 | O | 1 |
| 1600 | 7.0 | 43.0 | 50.0 | 8.328 | O | 1 |
| 1601 | 6.0 | 44.0 | 50.0 | 7.910 | O | 1 |
| 1602 | 5.0 | 45.0 | 50.0 | 7.492 | O | 1 |
| 1603 | 4.0 | 46.0 | 50.0 | 7.074 | O | 1 |
| 1604 | 3.0 | 47.0 | 50.0 | 6.656 | O | 1 |
| 1605 | 2.0 | 48.0 | 50.0 | 6.238 | O | 1 |
| 1606 | 1.0 | 49.0 | 50.0 | 5.820 | O | 1 |
| 1607 | 0.0 | 50.0 | 50.0 | 5.402 | O | 1 |
| 1608 | 38.0 | 7.0 | 55.0 | 19.085 | X | 1 |
| 1609 | 37.8 | 7.2 | 55.0 | 19.013 | X | 1 |
| 1610 | 37.7 | 7.3 | 55.0 | 18.978 | O | 1 |
| 1611 | 37.0 | 8.0 | 55.0 | 18.728 | O | 1 |
| 1612 | 36.0 | 9.0 | 55.0 | 18.371 | O | 1 |
| 1613 | 35.0 | 10.0 | 55.0 | 18.014 | O | 1 |
| 1614 | 34.0 | 11.0 | 55.0 | 17.657 | O | 1 |
| 1615 | 33.0 | 12.0 | 55.0 | 17.301 | O | 1 |
| 1616 | 32.0 | 13.0 | 55.0 | 16.944 | O | 1 |
| 1617 | 31.0 | 14.0 | 55.0 | 16.587 | O | 1 |
| 1618 | 30.0 | 15.0 | 55.0 | 16.230 | O | 1 |

[Table 34]

51

| 1619 | 29.0 | 16.0 | 55.0 | 15.873 | O | 1 |
|------|------|------|------|--------|---|---|
| 1620 | 28.0 | 17.0 | 55.0 | 15.516 | O | 1 |
| 1621 | 27.0 | 18.0 | 55.0 | 15.160 | O | 1 |
| 1622 | 26.0 | 19.0 | 55.0 | 14.803 | O | 1 |
| 1623 | 25.0 | 20.0 | 55.0 | 14.446 | O | 1 |
| 1624 | 24.0 | 21.0 | 55.0 | 14.089 | O | 1 |
| 1625 | 23.0 | 22.0 | 55.0 | 13.732 | O | 1 |
| 1626 | 22.0 | 23.0 | 55.0 | 13.376 | O | 1 |
| 1627 | 21.0 | 24.0 | 55.0 | 13.019 | O | 1 |
| 1628 | 20.0 | 25.0 | 55.0 | 12.662 | O | 1 |
| 1629 | 19.0 | 26.0 | 55.0 | 12.305 | O | 1 |
| 1630 | 18.0 | 27.0 | 55.0 | 11.948 | O | 1 |
| 1631 | 17.0 | 28.0 | 55.0 | 11.592 | O | 1 |
| 1632 | 16.0 | 29.0 | 55.0 | 11.235 | O | 1 |
| 1633 | 15.0 | 30.0 | 55.0 | 10.878 | O | 1 |
| 1634 | 14.0 | 31.0 | 55.0 | 10.521 | O | 1 |
| 1635 | 13.0 | 32.0 | 55.0 | 10.164 | O | 1 |
| 1636 | 12.0 | 33.0 | 55.0 | 9.807 | O | 1 |
| 1637 | 11.0 | 34.0 | 55.0 | 9.451 | O | 1 |
| 1638 | 10.0 | 35.0 | 55.0 | 9.094 | O | 1 |
| 1639 | 9.0 | 36.0 | 55.0 | 8.711 | O | 1 |
| 1640 | 8.0 | 37.0 | 55.0 | 8.293 | O | 1 |
| 1641 | 7.0 | 38.0 | 55.0 | 7.875 | O | 1 |
| 1642 | 6.0 | 39.0 | 55.0 | 7.457 | O | 1 |
| 1643 | 5.0 | 40.0 | 55.0 | 7.039 | O | 1 |
| 1644 | 4.0 | 41.0 | 55.0 | 6.622 | O | 1 |
| 1645 | 3.0 | 42.0 | 55.0 | 6.204 | O | 1 |
| 1646 | 2.0 | 43.0 | 55.0 | 5.786 | O | 1 |
| 1647 | 1.0 | 44.0 | 55.0 | 5.368 | O | 1 |
| 1648 | 0.0 | 45.0 | 55.0 | 4.950 | O | 1 |
| 1649 | 40.0 | 0.0 | 60.0 | 19.332 | X | 1 |
| 1650 | 39.1 | 0.9 | 60.0 | 19.011 | X | 1 |
| 1651 | 39.0 | 1.0 | 60.0 | 18.975 | O | 1 |
| 1652 | 38.0 | 2.0 | 60.0 | 18.619 | O | 1 |
| 1653 | 37.0 | 3.0 | 60.0 | 18.262 | O | 1 |
| 1654 | 36.0 | 4.0 | 60.0 | 17.905 | O | 1 |
| 1655 | 35.0 | 5.0 | 60.0 | 17.548 | O | 1 |
| 1656 | 34.0 | 6.0 | 60.0 | 17.191 | O | 1 |
| 1657 | 33.0 | 7.0 | 60.0 | 16.834 | O | 1 |
| 1658 | 32.0 | 8.0 | 60.0 | 16.478 | O | 1 |
| 1659 | 31.0 | 9.0 | 60.0 | 16.121 | O | 1 |
| 1660 | 30.0 | 10.0 | 60.0 | 15.764 | O | 1 |
| 1661 | 29.0 | 11.0 | 60.0 | 15.407 | O | 1 |
| 1662 | 28.0 | 12.0 | 60.0 | 15.050 | O | 1 |
| 1663 | 27.0 | 13.0 | 60.0 | 14.694 | O | 1 |
| 1664 | 26.0 | 14.0 | 60.0 | 14.337 | O | 1 |
| 1665 | 25.0 | 15.0 | 60.0 | 13.980 | O | 1 |
| 1666 | 24.0 | 16.0 | 60.0 | 13.623 | O | 1 |
| 1667 | 23.0 | 17.0 | 60.0 | 13.266 | O | 1 |
| 1668 | 22.0 | 18.0 | 60.0 | 12.909 | O | 1 |

[Table 35]

| 1669 | 21.0 | 19.0 | 60.0 | 12.553 | O | 1 |
|------|------|------|------|--------|---|---|
| 1670 | 20.0 | 20.0 | 60.0 | 12.196 | O | 1 |
| 1671 | 19.0 | 21.0 | 60.0 | 11.839 | O | 1 |
| 1672 | 18.0 | 22.0 | 60.0 | 11.482 | O | 1 |
| 1673 | 17.0 | 23.0 | 60.0 | 11.125 | O | 1 |
| 1674 | 16.0 | 24.0 | 60.0 | 10.769 | O | 1 |
| 1675 | 15.0 | 25.0 | 60.0 | 10.412 | O | 1 |
| 1676 | 14.0 | 26.0 | 60.0 | 10.055 | O | 1 |
| 1677 | 13.0 | 27.0 | 60.0 | 9.698 | O | 1 |
| 1678 | 12.0 | 28.0 | 60.0 | 9.341 | O | 1 |
| 1679 | 11.0 | 29.0 | 60.0 | 8.985 | O | 1 |
| 1680 | 10.0 | 30.0 | 60.0 | 8.628 | O | 1 |
| 1681 | 9.0 | 31.0 | 60.0 | 8.258 | O | 1 |
| 1682 | 8.0 | 32.0 | 60.0 | 7.841 | O | 1 |
| 1683 | 7.0 | 33.0 | 60.0 | 7.423 | O | 1 |
| 1684 | 6.0 | 34.0 | 60.0 | 7.005 | O | 1 |
| 1685 | 5.0 | 35.0 | 60.0 | 6.587 | O | 1 |
| 1686 | 4.0 | 36.0 | 60.0 | 6.169 | O | 1 |
| 1687 | 3.0 | 37.0 | 60.0 | 5.751 | O | 1 |
| 1688 | 2.0 | 38.0 | 60.0 | 5.333 | O | 1 |
| 1689 | 1.0 | 39.0 | 60.0 | 4.915 | O | 1 |
| 1690 | 0.0 | 40.0 | 60.0 | 4.497 | O | 1 |
| 1691 | 39.3 | 0.0 | 60.7 | 19.017 | X | 1 |
| 1692 | 39.2 | 0.0 | 60.8 | 18.972 | O | 1 |
| 1693 | 39.0 | 0.0 | 61.0 | 18.882 | O | 1 |

Tables 36 to 57 show the composition, combustion heat amount, and GWP of the working medium of a four-component system of propane, HFO-1123, HFO-1234yf, and HFO-1234ze(E).

[Table 36]

| Case | propane | HFO-1123 | HFO-1234yf | HFO-1234ze(E) | Heat of Combustion | Evaluation | GWP |
|---|---|---|---|---|---|---|---|
| 2826 | 24.0 | 66.0 | 5.0 | 5.0 | 19.247 | X | 1 |
| 2827 | 23.4 | 66.6 | 5.0 | 5.0 | 19.032 | X | 1 |
| 2828 | 23.3 | 66.7 | 5.0 | 5.0 | 18.997 | O | 1 |
| 2829 | 23.0 | 67.0 | 5.0 | 5.0 | 18.890 | O | 1 |
| 2830 | 20.0 | 70.0 | 5.0 | 5.0 | 17.819 | O | 1 |
| 2831 | 15.0 | 75.0 | 5.0 | 5.0 | 16.035 | O | 1 |
| 2832 | 10.0 | 80.0 | 5.0 | 5.0 | 14.159 | O | 1 |
| 2833 | 9.0 | 81.0 | 5.0 | 5.0 | 13.741 | O | 1 |
| 2834 | 8.0 | 82.0 | 5.0 | 5.0 | 13.323 | O | 1 |
| 2835 | 7.0 | 83.0 | 5.0 | 5.0 | 12.905 | O | 1 |
| 2836 | 6.0 | 84.0 | 5.0 | 5.0 | 12.487 | O | 1 |
| 2837 | 5.0 | 85.0 | 5.0 | 5.0 | 12.069 | O | 1 |
| 2838 | 4.0 | 86.0 | 5.0 | 5.0 | 11.651 | O | 1 |
| 2839 | 3.0 | 87.0 | 5.0 | 5.0 | 11.233 | O | 1 |
| 2840 | 2.0 | 88.0 | 5.0 | 5.0 | 10.815 | O | 1 |
| 2841 | 1.0 | 89.0 | 5.0 | 5.0 | 10.397 | O | 1 |
| 2842 | 0.0 | 90.0 | 5.0 | 5.0 | 9.979 | O | 1 |
| 2843 | 24.0 | 61.0 | 10.0 | 5.0 | 19.277 | X | 1 |
| 2844 | 23.3 | 61.7 | 10.0 | 5.0 | 19.027 | X | 1 |
| 2845 | 23.2 | 61.8 | 10.0 | 5.0 | 18.991 | O | 1 |
| 2846 | 23.0 | 62.0 | 10.0 | 5.0 | 18.920 | O | 1 |
| 2847 | 20.0 | 65.0 | 10.0 | 5.0 | 17.849 | O | 1 |
| 2848 | 15.0 | 70.0 | 10.0 | 5.0 | 16.065 | O | 1 |
| 2849 | 10.0 | 75.0 | 10.0 | 5.0 | 14.199 | O | 1 |
| 2850 | 9.0 | 76.0 | 10.0 | 5.0 | 13.781 | O | 1 |
| 2851 | 8.0 | 77.0 | 10.0 | 5.0 | 13.363 | O | 1 |
| 2852 | 7.0 | 78.0 | 10.0 | 5.0 | 12.945 | O | 1 |
| 2853 | 6.0 | 79.0 | 10.0 | 5.0 | 12.527 | O | 1 |
| 2854 | 5.0 | 80.0 | 10.0 | 5.0 | 12.109 | O | 1 |
| 2855 | 4.0 | 81.0 | 10.0 | 5.0 | 11.691 | O | 1 |
| 2856 | 3.0 | 82.0 | 10.0 | 5.0 | 11.273 | O | 1 |
| 2857 | 2.0 | 83.0 | 10.0 | 5.0 | 10.855 | O | 1 |
| 2858 | 1.0 | 84.0 | 10.0 | 5.0 | 10.437 | O | 1 |
| 2859 | 0.0 | 85.0 | 10.0 | 5.0 | 10.020 | O | 1 |
| 2860 | 24.0 | 56.0 | 15.0 | 5.0 | 19.306 | X | 1 |
| 2861 | 23.2 | 56.8 | 15.0 | 5.0 | 19.021 | X | 1 |
| 2862 | 23.1 | 56.9 | 15.0 | 5.0 | 18.985 | O | 1 |
| 2863 | 23.0 | 57.0 | 15.0 | 5.0 | 18.950 | O | 1 |
| 2864 | 20.0 | 60.0 | 15.0 | 5.0 | 17.879 | O | 1 |
| 2865 | 15.0 | 65.0 | 15.0 | 5.0 | 16.095 | O | 1 |
| 2866 | 10.0 | 70.0 | 15.0 | 5.0 | 14.239 | O | 1 |
| 2867 | 9.0 | 71.0 | 15.0 | 5.0 | 13.821 | O | 1 |
| 2868 | 8.0 | 72.0 | 15.0 | 5.0 | 13.403 | O | 1 |
| 2869 | 7.0 | 73.0 | 15.0 | 5.0 | 12.985 | O | 1 |
| 2870 | 6.0 | 74.0 | 15.0 | 5.0 | 12.567 | O | 1 |
| 2871 | 5.0 | 75.0 | 15.0 | 5.0 | 12.149 | O | 1 |
| 2872 | 4.0 | 76.0 | 15.0 | 5.0 | 11.731 | O | 1 |
| 2873 | 3.0 | 77.0 | 15.0 | 5.0 | 11.313 | O | 1 |
| 2874 | 2.0 | 78.0 | 15.0 | 5.0 | 10.895 | O | 1 |
| 2875 | 1.0 | 79.0 | 15.0 | 5.0 | 10.478 | O | 1 |

[Table 37]

| 2876 | 0.0 | 80.0 | 15.0 | 5.0 | 10.060 | O | 1 |
|---|---|---|---|---|---|---|---|
| 2877 | 24.0 | 51.0 | 20.0 | 5.0 | 19.336 | X | 1 |
| 2878 | 23.1 | 51.9 | 20.0 | 5.0 | 19.015 | X | 1 |
| 2879 | 23.0 | 52.0 | 20.0 | 5.0 | 18.980 | O | 1 |
| 2880 | 20.0 | 55.0 | 20.0 | 5.0 | 17.909 | O | 1 |
| 2881 | 15.0 | 60.0 | 20.0 | 5.0 | 16.125 | O | 1 |
| 2882 | 10.0 | 65.0 | 20.0 | 5.0 | 14.279 | O | 1 |
| 2883 | 9.0 | 66.0 | 20.0 | 5.0 | 13.861 | O | 1 |
| 2884 | 8.0 | 67.0 | 20.0 | 5.0 | 13.443 | O | 1 |
| 2885 | 7.0 | 68.0 | 20.0 | 5.0 | 13.025 | O | 1 |
| 2886 | 6.0 | 69.0 | 20.0 | 5.0 | 12.607 | O | 1 |
| 2887 | 5.0 | 70.0 | 20.0 | 5.0 | 12.189 | O | 1 |
| 2888 | 4.0 | 71.0 | 20.0 | 5.0 | 11.771 | O | 1 |
| 2889 | 3.0 | 72.0 | 20.0 | 5.0 | 11.354 | O | 1 |
| 2890 | 2.0 | 73.0 | 20.0 | 5.0 | 10.936 | O | 1 |
| 2891 | 1.0 | 74.0 | 20.0 | 5.0 | 10.518 | O | 1 |
| 2892 | 0.0 | 75.0 | 20.0 | 5.0 | 10.100 | O | 1 |
| 2893 | 23.0 | 47.0 | 25.0 | 5.0 | 19.010 | X | 1 |
| 2894 | 22.9 | 47.1 | 25.0 | 5.0 | 18.974 | O | 1 |
| 2895 | 22.0 | 48.0 | 25.0 | 5.0 | 18.653 | O | 1 |
| 2896 | 20.0 | 50.0 | 25.0 | 5.0 | 17.939 | O | 1 |
| 2897 | 15.0 | 55.0 | 25.0 | 5.0 | 16.155 | O | 1 |
| 2898 | 10.0 | 60.0 | 25.0 | 5.0 | 14.319 | O | 1 |
| 2899 | 9.0 | 61.0 | 25.0 | 5.0 | 13.901 | O | 1 |
| 2900 | 8.0 | 62.0 | 25.0 | 5.0 | 13.483 | O | 1 |
| 2901 | 7.0 | 63.0 | 25.0 | 5.0 | 13.065 | O | 1 |
| 2902 | 6.0 | 64.0 | 25.0 | 5.0 | 12.647 | O | 1 |
| 2903 | 5.0 | 65.0 | 25.0 | 5.0 | 12.230 | O | 1 |
| 2904 | 4.0 | 66.0 | 25.0 | 5.0 | 11.812 | O | 1 |
| 2905 | 3.0 | 67.0 | 25.0 | 5.0 | 11.394 | O | 1 |
| 2906 | 2.0 | 68.0 | 25.0 | 5.0 | 10.976 | O | 1 |
| 2907 | 1.0 | 69.0 | 25.0 | 5.0 | 10.558 | O | 1 |
| 2908 | 0.0 | 70.0 | 25.0 | 5.0 | 10.140 | O | 1 |
| 2909 | 23.0 | 42.0 | 30.0 | 5.0 | 19.040 | X | 1 |
| 2910 | 22.9 | 42.1 | 30.0 | 5.0 | 19.004 | X | 1 |
| 2911 | 22.8 | 42.2 | 30.0 | 5.0 | 18.968 | O | 1 |
| 2912 | 22.0 | 43.0 | 30.0 | 5.0 | 18.683 | O | 1 |
| 2913 | 20.0 | 45.0 | 30.0 | 5.0 | 17.969 | O | 1 |
| 2914 | 15.0 | 50.0 | 30.0 | 5.0 | 16.185 | O | 1 |
| 2915 | 10.0 | 55.0 | 30.0 | 5.0 | 14.359 | O | 1 |
| 2916 | 9.0 | 56.0 | 30.0 | 5.0 | 13.941 | O | 1 |
| 2917 | 8.0 | 57.0 | 30.0 | 5.0 | 13.523 | O | 1 |
| 2918 | 7.0 | 58.0 | 30.0 | 5.0 | 13.105 | O | 1 |
| 2919 | 6.0 | 59.0 | 30.0 | 5.0 | 12.688 | O | 1 |
| 2920 | 5.0 | 60.0 | 30.0 | 5.0 | 12.270 | O | 1 |
| 2921 | 4.0 | 61.0 | 30.0 | 5.0 | 11.852 | O | 1 |
| 2922 | 3.0 | 62.0 | 30.0 | 5.0 | 11.434 | O | 1 |
| 2923 | 2.0 | 63.0 | 30.0 | 5.0 | 11.016 | O | 1 |
| 2924 | 1.0 | 64.0 | 30.0 | 5.0 | 10.598 | O | 1 |
| 2925 | 0.0 | 65.0 | 30.0 | 5.0 | 10.180 | O | 1 |

[Table 38]

| 2926 | 23.0 | 37.0 | 35.0 | 5.0 | 19.070 | X | 1 |
|---|---|---|---|---|---|---|---|
| 2927 | 22.9 | 37.1 | 35.0 | 5.0 | 19.034 | X | 1 |
| 2928 | 22.8 | 37.2 | 35.0 | 5.0 | 18.998 | O | 1 |
| 2929 | 22.0 | 38.0 | 35.0 | 5.0 | 18.713 | O | 1 |
| 2930 | 20.0 | 40.0 | 35.0 | 5.0 | 17.999 | O | 1 |
| 2931 | 15.0 | 45.0 | 35.0 | 5.0 | 16.215 | O | 1 |
| 2932 | 10.0 | 50.0 | 35.0 | 5.0 | 14.399 | O | 1 |
| 2933 | 9.0 | 51.0 | 35.0 | 5.0 | 13.981 | O | 1 |
| 2934 | 8.0 | 52.0 | 35.0 | 5.0 | 13.564 | O | 1 |
| 2935 | 7.0 | 53.0 | 35.0 | 5.0 | 13.146 | O | 1 |
| 2936 | 6.0 | 54.0 | 35.0 | 5.0 | 12.728 | O | 1 |
| 2937 | 5.0 | 55.0 | 35.0 | 5.0 | 12.310 | O | 1 |
| 2938 | 4.0 | 56.0 | 35.0 | 5.0 | 11.892 | O | 1 |
| 2939 | 3.0 | 57.0 | 35.0 | 5.0 | 11.474 | O | 1 |
| 2940 | 2.0 | 58.0 | 35.0 | 5.0 | 11.056 | O | 1 |
| 2941 | 1.0 | 59.0 | 35.0 | 5.0 | 10.638 | O | 1 |
| 2942 | 0.0 | 60.0 | 35.0 | 5.0 | 10.220 | O | 1 |
| 2943 | 23.0 | 32.0 | 40.0 | 5.0 | 19.100 | X | 1 |
| 2944 | 22.8 | 32.2 | 40.0 | 5.0 | 19.028 | X | 1 |
| 2945 | 22.7 | 32.3 | 40.0 | 5.0 | 18.992 | O | 1 |
| 2946 | 22.0 | 33.0 | 40.0 | 5.0 | 18.743 | O | 1 |
| 2947 | 20.0 | 35.0 | 40.0 | 5.0 | 18.029 | O | 1 |
| 2948 | 15.0 | 40.0 | 40.0 | 5.0 | 16.245 | O | 1 |
| 2949 | 10.0 | 45.0 | 40.0 | 5.0 | 14.440 | O | 1 |
| 2950 | 9.0 | 46.0 | 40.0 | 5.0 | 14.022 | O | 1 |
| 2951 | 8.0 | 47.0 | 40.0 | 5.0 | 13.604 | O | 1 |
| 2952 | 7.0 | 48.0 | 40.0 | 5.0 | 13.186 | O | 1 |
| 2953 | 6.0 | 49.0 | 40.0 | 5.0 | 12.768 | O | 1 |
| 2954 | 5.0 | 50.0 | 40.0 | 5.0 | 12.350 | O | 1 |
| 2955 | 4.0 | 51.0 | 40.0 | 5.0 | 11.932 | O | 1 |
| 2956 | 3.0 | 52.0 | 40.0 | 5.0 | 11.514 | O | 1 |
| 2957 | 2.0 | 53.0 | 40.0 | 5.0 | 11.096 | O | 1 |
| 2958 | 1.0 | 54.0 | 40.0 | 5.0 | 10.678 | O | 1 |
| 2959 | 0.0 | 55.0 | 40.0 | 5.0 | 10.260 | O | 1 |
| 2960 | 23.0 | 27.0 | 45.0 | 5.0 | 19.130 | X | 1 |
| 2961 | 22.7 | 27.3 | 45.0 | 5.0 | 19.022 | X | 1 |
| 2962 | 22.6 | 27.4 | 45.0 | 5.0 | 18.987 | O | 1 |
| 2963 | 22.0 | 28.0 | 45.0 | 5.0 | 18.773 | O | 1 |
| 2964 | 20.0 | 30.0 | 45.0 | 5.0 | 18.059 | O | 1 |
| 2965 | 15.0 | 35.0 | 45.0 | 5.0 | 16.275 | O | 1 |
| 2966 | 10.0 | 40.0 | 45.0 | 5.0 | 14.480 | O | 1 |
| 2967 | 9.0 | 41.0 | 45.0 | 5.0 | 14.062 | O | 1 |
| 2968 | 8.0 | 42.0 | 45.0 | 5.0 | 13.644 | O | 1 |
| 2969 | 7.0 | 43.0 | 45.0 | 5.0 | 13.226 | O | 1 |
| 2970 | 6.0 | 44.0 | 45.0 | 5.0 | 12.808 | O | 1 |
| 2971 | 5.0 | 45.0 | 45.0 | 5.0 | 12.390 | O | 1 |
| 2972 | 4.0 | 46.0 | 45.0 | 5.0 | 11.972 | O | 1 |
| 2973 | 3.0 | 47.0 | 45.0 | 5.0 | 11.554 | O | 1 |
| 2974 | 2.0 | 48.0 | 45.0 | 5.0 | 11.136 | O | 1 |
| 2975 | 1.0 | 49.0 | 45.0 | 5.0 | 10.718 | O | 1 |

[Table 39]

| 2976 | 0.0 | 50.0 | 45.0 | 5.0 | 10.300 | O | 1 |
|------|------|------|------|-----|--------|---|---|
| 2977 | 23.0 | 22.0 | 50.0 | 5.0 | 19.159 | X | 1 |
| 2978 | 22.6 | 22.4 | 50.0 | 5.0 | 19.017 | X | 1 |
| 2979 | 22.5 | 22.5 | 50.0 | 5.0 | 18.981 | O | 1 |
| 2980 | 22.0 | 23.0 | 50.0 | 5.0 | 18.803 | O | 1 |
| 2981 | 20.0 | 25.0 | 50.0 | 5.0 | 18.089 | O | 1 |
| 2982 | 15.0 | 30.0 | 50.0 | 5.0 | 16.305 | O | 1 |
| 2983 | 10.0 | 35.0 | 50.0 | 5.0 | 14.520 | O | 1 |
| 2984 | 9.0 | 36.0 | 50.0 | 5.0 | 14.102 | O | 1 |
| 2985 | 8.0 | 37.0 | 50.0 | 5.0 | 13.684 | O | 1 |
| 2986 | 7.0 | 38.0 | 50.0 | 5.0 | 13.266 | O | 1 |
| 2987 | 6.0 | 39.0 | 50.0 | 5.0 | 12.848 | O | 1 |
| 2988 | 5.0 | 40.0 | 50.0 | 5.0 | 12.430 | O | 1 |
| 2989 | 4.0 | 41.0 | 50.0 | 5.0 | 12.012 | O | 1 |
| 2990 | 3.0 | 42.0 | 50.0 | 5.0 | 11.594 | O | 1 |
| 2991 | 2.0 | 43.0 | 50.0 | 5.0 | 11.176 | O | 1 |
| 2992 | 1.0 | 44.0 | 50.0 | 5.0 | 10.759 | O | 1 |
| 2993 | 0.0 | 45.0 | 50.0 | 5.0 | 10.341 | O | 1 |
| 2994 | 23.0 | 17.0 | 55.0 | 5.0 | 19.189 | X | 1 |
| 2995 | 22.5 | 17.5 | 55.0 | 5.0 | 19.011 | X | 1 |
| 2996 | 22.4 | 17.6 | 55.0 | 5.0 | 18.975 | O | 1 |
| 2997 | 22.0 | 18.0 | 55.0 | 5.0 | 18.833 | O | 1 |
| 2998 | 20.0 | 20.0 | 55.0 | 5.0 | 18.119 | O | 1 |
| 2999 | 15.0 | 25.0 | 55.0 | 5.0 | 16.335 | O | 1 |
| 3000 | 10.0 | 30.0 | 55.0 | 5.0 | 14.551 | O | 1 |
| 3001 | 9.0 | 31.0 | 55.0 | 5.0 | 14.142 | O | 1 |
| 3002 | 8.0 | 32.0 | 55.0 | 5.0 | 13.724 | O | 1 |
| 3003 | 7.0 | 33.0 | 55.0 | 5.0 | 13.306 | O | 1 |
| 3004 | 6.0 | 34.0 | 55.0 | 5.0 | 12.888 | O | 1 |
| 3005 | 5.0 | 35.0 | 55.0 | 5.0 | 12.470 | O | 1 |
| 3006 | 4.0 | 36.0 | 55.0 | 5.0 | 12.052 | O | 1 |
| 3007 | 3.0 | 37.0 | 55.0 | 5.0 | 11.634 | O | 1 |
| 3008 | 2.0 | 38.0 | 55.0 | 5.0 | 11.217 | O | 1 |
| 3009 | 1.0 | 39.0 | 55.0 | 5.0 | 10.799 | O | 1 |
| 3010 | 0.0 | 40.0 | 55.0 | 5.0 | 10.381 | O | 1 |
| 3011 | 23.0 | 12.0 | 60.0 | 5.0 | 19.219 | X | 1 |
| 3012 | 22.4 | 12.6 | 60.0 | 5.0 | 19.005 | X | 1 |
| 3013 | 22.3 | 12.7 | 60.0 | 5.0 | 18.970 | O | 1 |
| 3014 | 22.0 | 13.0 | 60.0 | 5.0 | 18.863 | O | 1 |
| 3015 | 20.0 | 15.0 | 60.0 | 5.0 | 18.149 | O | 1 |
| 3016 | 15.0 | 20.0 | 60.0 | 5.0 | 16.365 | O | 1 |
| 3017 | 10.0 | 25.0 | 60.0 | 5.0 | 14.581 | O | 1 |
| 3018 | 9.0 | 26.0 | 60.0 | 5.0 | 14.182 | O | 1 |
| 3019 | 8.0 | 27.0 | 60.0 | 5.0 | 13.764 | O | 1 |
| 3020 | 7.0 | 28.0 | 60.0 | 5.0 | 13.346 | O | 1 |
| 3021 | 6.0 | 29.0 | 60.0 | 5.0 | 12.928 | O | 1 |
| 3022 | 5.0 | 30.0 | 60.0 | 5.0 | 12.510 | O | 1 |
| 3023 | 4.0 | 31.0 | 60.0 | 5.0 | 12.093 | O | 1 |
| 3024 | 3.0 | 32.0 | 60.0 | 5.0 | 11.675 | O | 1 |
| 3025 | 2.0 | 33.0 | 60.0 | 5.0 | 11.257 | O | 1 |

[Table 40]

| 3026 | 1.0 | 34.0 | 60.0 | 5.0 | 10.839 | O | 1 |
|---|---|---|---|---|---|---|---|
| 3027 | 0.0 | 35.0 | 60.0 | 5.0 | 10.421 | O | 1 |
| 3028 | 23.0 | 7.0 | 65.0 | 5.0 | 19.249 | X | 1 |
| 3029 | 22.3 | 7.7 | 65.0 | 5.0 | 19.000 | **X** | 1 |
| 3030 | 22.2 | 7.8 | 65.0 | 5.0 | 18.964 | O | 1 |
| 3031 | 22.0 | 8.0 | 65.0 | 5.0 | 18.893 | O | 1 |
| 3032 | 20.0 | 10.0 | 65.0 | 5.0 | 18.179 | O | 1 |
| 3033 | 15.0 | 15.0 | 65.0 | 5.0 | 16.395 | O | 1 |
| 3034 | 10.0 | 20.0 | 65.0 | 5.0 | 14.611 | O | 1 |
| 3035 | 9.0 | 21.0 | 65.0 | 5.0 | 14.222 | O | 1 |
| 3036 | 8.0 | 22.0 | 65.0 | 5.0 | 13.804 | O | 1 |
| 3037 | 7.0 | 23.0 | 65.0 | 5.0 | 13.386 | O | 1 |
| 3038 | 6.0 | 24.0 | 65.0 | 5.0 | 12.969 | O | 1 |
| 3039 | 5.0 | 25.0 | 65.0 | 5.0 | 12.551 | O | 1 |
| 3040 | 4.0 | 26.0 | 65.0 | 5.0 | 12.133 | O | 1 |
| 3041 | 3.0 | 22.0 | 70.0 | 5.0 | 11.755 | O | 1 |
| 3042 | 2.0 | 23.0 | 70.0 | 5.0 | 11.337 | O | 1 |
| 3043 | 1.0 | 24.0 | 70.0 | 5.0 | 10.919 | O | 1 |
| 3044 | 0.0 | 25.0 | 70.0 | 5.0 | 10.501 | O | 1 |
| 3045 | 23.0 | 2.0 | 70.0 | 5.0 | 19.279 | X | 1 |
| 3046 | 22.3 | 2.7 | 70.0 | 5.0 | 19.030 | X | 1 |
| 3047 | 22.2 | 2.8 | 70.0 | 5.0 | 18.994 | O | 1 |
| 3048 | 22.0 | 3.0 | 70.0 | 5.0 | 18.923 | O | 1 |
| 3049 | 20.0 | 5.0 | 70.0 | 5.0 | 18.209 | O | 1 |
| 3050 | 15.0 | 10.0 | 70.0 | 5.0 | 16.425 | O | 1 |
| 3051 | 10.0 | 15.0 | 70.0 | 5.0 | 14.641 | O | 1 |
| 3052 | 9.0 | 16.0 | 70.0 | 5.0 | 14.262 | O | 1 |
| 3053 | 8.0 | 17.0 | 70.0 | 5.0 | 13.844 | O | 1 |
| 3054 | 7.0 | 18.0 | 70.0 | 5.0 | 13.427 | O | 1 |
| 3055 | 6.0 | 19.0 | 70.0 | 5.0 | 13.009 | O | 1 |
| 3056 | 5.0 | 20.0 | 70.0 | 5.0 | 12.591 | O | 1 |
| 3057 | 4.0 | 21.0 | 70.0 | 5.0 | 12.173 | O | 1 |
| 3058 | 3.0 | 22.0 | 70.0 | 5.0 | 11.755 | O | 1 |
| 3059 | 2.0 | 23.0 | 70.0 | 5.0 | 11.337 | O | 1 |
| 3060 | 1.0 | 24.0 | 70.0 | 5.0 | 10.919 | O | 1 |
| 3061 | 0.0 | 25.0 | 70.0 | 5.0 | 10.501 | O | 1 |
| 3062 | 24.0 | 61.0 | 5.0 | 10.0 | 19.247 | X | 1 |
| 3063 | 23.4 | 61.6 | 5.0 | 10.0 | 19.033 | X | 1 |
| 3064 | 23.3 | 61.7 | 5.0 | 10.0 | 18.997 | O | 1 |
| 3065 | 23.0 | 62.0 | 5.0 | 10.0 | 18.890 | O | 1 |
| 3066 | 20.0 | 65.0 | 5.0 | 10.0 | 17.820 | O | 1 |
| 3067 | 15.0 | 70.0 | 5.0 | 10.0 | 16.035 | O | 1 |
| 3068 | 10.0 | 75.0 | 5.0 | 10.0 | 14.169 | O | 1 |
| 3069 | 9.0 | 76.0 | 5.0 | 10.0 | 13.751 | O | 1 |
| 3070 | 8.0 | 77.0 | 5.0 | 10.0 | 13.333 | O | 1 |
| 3071 | 7.0 | 78.0 | 5.0 | 10.0 | 12.915 | O | 1 |
| 3072 | 6.0 | 79.0 | 5.0 | 10.0 | 12.497 | O | 1 |
| 3073 | 5.0 | 80.0 | 5.0 | 10.0 | 12.079 | O | 1 |
| 3074 | 4.0 | 81.0 | 5.0 | 10.0 | 11.662 | O | 1 |
| 3075 | 3.0 | 82.0 | 5.0 | 10.0 | 11.244 | O | 1 |

[Table 41]

| | | | | | | | |
|---|---|---|---|---|---|---|---|
| 3076 | 2.0 | 83.0 | 5.0 | 10.0 | 10.826 | O | 1 |
| 3077 | 1.0 | 84.0 | 5.0 | 10.0 | 10.408 | O | 1 |
| 3078 | 0.0 | 85.0 | 5.0 | 10.0 | 9.990 | O | 1 |
| 3079 | 24.0 | 56.0 | 10.0 | 10.0 | 19.277 | X | 1 |
| 3080 | 23.3 | 56.7 | 10.0 | 10.0 | 19.027 | X | 1 |
| 3081 | 23.2 | 56.8 | 10.0 | 10.0 | 18.991 | O | 1 |
| 3082 | 23.0 | 57.0 | 10.0 | 10.0 | 18.920 | O | 1 |
| 3083 | 20.0 | 60.0 | 10.0 | 10.0 | 17.850 | O | 1 |
| 3084 | 15.0 | 65.0 | 10.0 | 10.0 | 16.065 | O | 1 |
| 3085 | 10.0 | 70.0 | 10.0 | 10.0 | 14.209 | O | 1 |
| 3086 | 9.0 | 71.0 | 10.0 | 10.0 | 13.791 | O | 1 |
| 3087 | 8.0 | 72.0 | 10.0 | 10.0 | 13.373 | O | 1 |
| 3088 | 7.0 | 73.0 | 10.0 | 10.0 | 12.955 | O | 1 |
| 3089 | 6.0 | 74.0 | 10.0 | 10.0 | 12.537 | O | 1 |
| 3090 | 5.0 | 75.0 | 10.0 | 10.0 | 12.120 | O | 1 |
| 3091 | 4.0 | 76.0 | 10.0 | 10.0 | 11.702 | O | 1 |
| 3092 | 3.0 | 77.0 | 10.0 | 10.0 | 11.284 | O | 1 |
| 3093 | 2.0 | 78.0 | 10.0 | 10.0 | 10.866 | O | 1 |
| 3094 | 1.0 | 79.0 | 10.0 | 10.0 | 10.448 | O | 1 |
| 3095 | 0.0 | 80.0 | 10.0 | 10.0 | 10.030 | O | 1 |
| 3096 | 24.0 | 51.0 | 15.0 | 10.0 | 19.307 | X | 1 |
| 3097 | 23.2 | 51.8 | 15.0 | 10.0 | 19.021 | X | 1 |
| 3098 | 23.1 | 51.9 | 15.0 | 10.0 | 18.986 | O | 1 |
| 3099 | 23.0 | 52.0 | 15.0 | 10.0 | 18.950 | O | 1 |
| 3100 | 20.0 | 55.0 | 15.0 | 10.0 | 17.880 | O | 1 |
| 3101 | 15.0 | 60.0 | 15.0 | 10.0 | 16.095 | O | 1 |
| 3102 | 10.0 | 65.0 | 15.0 | 10.0 | 14.249 | O | 1 |
| 3103 | 9.0 | 66.0 | 15.0 | 10.0 | 13.831 | O | 1 |
| 3104 | 8.0 | 67.0 | 15.0 | 10.0 | 13.413 | O | 1 |
| 3105 | 7.0 | 68.0 | 15.0 | 10.0 | 12.996 | O | 1 |
| 3106 | 6.0 | 69.0 | 15.0 | 10.0 | 12.578 | O | 1 |
| 3107 | 5.0 | 70.0 | 15.0 | 10.0 | 12.160 | O | 1 |
| 3108 | 4.0 | 71.0 | 15.0 | 10.0 | 11.742 | O | 1 |
| 3109 | 3.0 | 72.0 | 15.0 | 10.0 | 11.324 | O | 1 |
| 3110 | 2.0 | 73.0 | 15.0 | 10.0 | 10.906 | O | 1 |
| 3111 | 1.0 | 74.0 | 15.0 | 10.0 | 10.488 | O | 1 |
| 3112 | 0.0 | 75.0 | 15.0 | 10.0 | 10.070 | O | 1 |
| 3113 | 24.0 | 46.0 | 20.0 | 10.0 | 19.337 | X | 1 |
| 3114 | 23.1 | 46.9 | 20.0 | 10.0 | 19.016 | X | 1 |
| 3115 | 23.0 | 47.0 | 20.0 | 10.0 | 18.980 | O | 1 |
| 3116 | 20.0 | 50.0 | 20.0 | 10.0 | 17.909 | O | 1 |
| 3117 | 15.0 | 55.0 | 20.0 | 10.0 | 16.125 | O | 1 |
| 3118 | 10.0 | 60.0 | 20.0 | 10.0 | 14.289 | O | 1 |
| 3119 | 9.0 | 61.0 | 20.0 | 10.0 | 13.872 | O | 1 |
| 3120 | 8.0 | 62.0 | 20.0 | 10.0 | 13.454 | O | 1 |
| 3121 | 7.0 | 63.0 | 20.0 | 10.0 | 13.036 | O | 1 |
| 3122 | 6.0 | 64.0 | 20.0 | 10.0 | 12.618 | O | 1 |
| 3123 | 5.0 | 65.0 | 20.0 | 10.0 | 12.200 | O | 1 |
| 3124 | 4.0 | 66.0 | 20.0 | 10.0 | 11.782 | O | 1 |
| 3125 | 3.0 | 67.0 | 20.0 | 10.0 | 11.364 | O | 1 |

[Table 42]

| 3126 | 2.0 | 68.0 | 20.0 | 10.0 | 10.946 | O | 1 |
|---|---|---|---|---|---|---|---|
| 3127 | 1.0 | 69.0 | 20.0 | 10.0 | 10.528 | O | 1 |
| 3128 | 0.0 | 70.0 | 20.0 | 10.0 | 10.110 | O | 1 |
| 3129 | 23.0 | 42.0 | 25.0 | 10.0 | 19.010 | X | 1 |
| 3130 | 22.9 | 42.1 | 25.0 | 10.0 | 18.974 | O | 1 |
| 3131 | 22.0 | 43.0 | 25.0 | 10.0 | 18.653 | O | 1 |
| 3132 | 20.0 | 45.0 | 25.0 | 10.0 | 17.939 | O | 1 |
| 3133 | 15.0 | 50.0 | 25.0 | 10.0 | 16.155 | O | 1 |
| 3134 | 10.0 | 55.0 | 25.0 | 10.0 | 14.330 | O | 1 |
| 3135 | 9.0 | 56.0 | 25.0 | 10.0 | 13.912 | O | 1 |
| 3136 | 8.0 | 57.0 | 25.0 | 10.0 | 13.494 | O | 1 |
| 3137 | 7.0 | 58.0 | 25.0 | 10.0 | 13.076 | O | 1 |
| 3138 | 6.0 | 59.0 | 25.0 | 10.0 | 12.658 | O | 1 |
| 3139 | 5.0 | 60.0 | 25.0 | 10.0 | 12.240 | O | 1 |
| 3140 | 4.0 | 61.0 | 25.0 | 10.0 | 11.822 | O | 1 |
| 3141 | 3.0 | 62.0 | 25.0 | 10.0 | 11.404 | O | 1 |
| 3142 | 2.0 | 63.0 | 25.0 | 10.0 | 10.986 | O | 1 |
| 3143 | 1.0 | 64.0 | 25.0 | 10.0 | 10.568 | O | 1 |
| 3144 | 0.0 | 65.0 | 25.0 | 10.0 | 10.150 | O | 1 |
| 3145 | 23.0 | 37.0 | 30.0 | 10.0 | 19.040 | X | 1 |
| 3146 | 22.9 | 37.1 | 30.0 | 10.0 | 19.004 | X | 1 |
| 3147 | 22.8 | 37.2 | 30.0 | 10.0 | 18.969 | O | 1 |
| 3148 | 22.0 | 38.0 | 30.0 | 10.0 | 18.683 | O | 1 |
| 3149 | 20.0 | 40.0 | 30.0 | 10.0 | 17.969 | O | 1 |
| 3150 | 15.0 | 45.0 | 30.0 | 10.0 | 16.185 | O | 1 |
| 3151 | 10.0 | 50.0 | 30.0 | 10.0 | 14.370 | O | 1 |
| 3152 | 9.0 | 51.0 | 30.0 | 10.0 | 13.952 | O | 1 |
| 3153 | 8.0 | 52.0 | 30.0 | 10.0 | 13.534 | O | 1 |
| 3154 | 7.0 | 53.0 | 30.0 | 10.0 | 13.116 | O | 1 |
| 3155 | 6.0 | 54.0 | 30.0 | 10.0 | 12.698 | O | 1 |
| 3156 | 5.0 | 55.0 | 30.0 | 10.0 | 12.280 | O | 1 |
| 3157 | 4.0 | 56.0 | 30.0 | 10.0 | 11.862 | O | 1 |
| 3158 | 3.0 | 57.0 | 30.0 | 10.0 | 11.444 | O | 1 |
| 3159 | 2.0 | 58.0 | 30.0 | 10.0 | 11.026 | O | 1 |
| 3160 | 1.0 | 59.0 | 30.0 | 10.0 | 10.608 | O | 1 |
| 3161 | 0.0 | 60.0 | 30.0 | 10.0 | 10.191 | O | 1 |
| 3162 | 23.0 | 32.0 | 35.0 | 10.0 | 19.070 | X | 1 |
| 3163 | 22.9 | 32.1 | 35.0 | 10.0 | 19.034 | X | 1 |
| 3164 | 22.8 | 32.2 | 35.0 | 10.0 | 18.998 | O | 1 |
| 3165 | 22.0 | 33.0 | 35.0 | 10.0 | 18.713 | O | 1 |
| 3166 | 20.0 | 35.0 | 35.0 | 10.0 | 17.999 | O | 1 |
| 3167 | 15.0 | 40.0 | 35.0 | 10.0 | 16.215 | O | 1 |
| 3168 | 10.0 | 45.0 | 35.0 | 10.0 | 14.410 | O | 1 |
| 3169 | 9.0 | 46.0 | 35.0 | 10.0 | 13.992 | O | 1 |
| 3170 | 8.0 | 47.0 | 35.0 | 10.0 | 13.574 | O | 1 |
| 3171 | 7.0 | 48.0 | 35.0 | 10.0 | 13.156 | O | 1 |
| 3172 | 6.0 | 49.0 | 35.0 | 10.0 | 12.738 | O | 1 |
| 3173 | 5.0 | 50.0 | 35.0 | 10.0 | 12.320 | O | 1 |
| 3174 | 4.0 | 51.0 | 35.0 | 10.0 | 11.902 | O | 1 |
| 3175 | 3.0 | 52.0 | 35.0 | 10.0 | 11.484 | O | 1 |

[Table 43]

| 3176 | 2.0 | 53.0 | 35.0 | 10.0 | 11.066 | O | 1 |
|------|------|------|------|------|--------|---|---|
| 3177 | 1.0 | 54.0 | 35.0 | 10.0 | 10.649 | O | 1 |
| 3178 | 0.0 | 55.0 | 35.0 | 10.0 | 10.231 | O | 1 |
| 3179 | 23.0 | 27.0 | 40.0 | 10.0 | 19.100 | X | 1 |
| 3180 | 22.8 | 27.2 | 40.0 | 10.0 | 19.028 | X | 1 |
| 3181 | 22.7 | 27.3 | 40.0 | 10.0 | 18.993 | O | 1 |
| 3182 | 22.0 | 28.0 | 40.0 | 10.0 | 18.743 | O | 1 |
| 3183 | 20.0 | 30.0 | 40.0 | 10.0 | 18.029 | O | 1 |
| 3184 | 15.0 | 35.0 | 40.0 | 10.0 | 16.245 | O | 1 |
| 3185 | 10.0 | 40.0 | 40.0 | 10.0 | 14.450 | O | 1 |
| 3186 | 9.0 | 41.0 | 40.0 | 10.0 | 14.032 | O | 1 |
| 3187 | 8.0 | 42.0 | 40.0 | 10.0 | 13.614 | O | 1 |
| 3188 | 7.0 | 43.0 | 40.0 | 10.0 | 13.196 | O | 1 |
| 3189 | 6.0 | 44.0 | 40.0 | 10.0 | 12.778 | O | 1 |
| 3190 | 5.0 | 45.0 | 40.0 | 10.0 | 12.360 | O | 1 |
| 3191 | 4.0 | 46.0 | 40.0 | 10.0 | 11.942 | O | 1 |
| 3192 | 3.0 | 47.0 | 40.0 | 10.0 | 11.525 | O | 1 |
| 3193 | 2.0 | 48.0 | 40.0 | 10.0 | 11.107 | O | 1 |
| 3194 | 1.0 | 49.0 | 40.0 | 10.0 | 10.689 | O | 1 |
| 3195 | 0.0 | 50.0 | 40.0 | 10.0 | 10.271 | O | 1 |
| 3196 | 23.0 | 22.0 | 45.0 | 10.0 | 19.130 | X | 1 |
| 3197 | 22.7 | 22.3 | 45.0 | 10.0 | 19.023 | X | 1 |
| 3198 | 22.6 | 22.4 | 45.0 | 10.0 | 18.987 | O | 1 |
| 3199 | 22.0 | 23.0 | 45.0 | 10.0 | 18.773 | O | 1 |
| 3200 | 20.0 | 25.0 | 45.0 | 10.0 | 18.059 | O | 1 |
| 3201 | 15.0 | 30.0 | 45.0 | 10.0 | 16.275 | O | 1 |
| 3202 | 10.0 | 35.0 | 45.0 | 10.0 | 14.490 | O | 1 |
| 3203 | 9.0 | 36.0 | 45.0 | 10.0 | 14.072 | O | 1 |
| 3204 | 8.0 | 37.0 | 45.0 | 10.0 | 13.654 | O | 1 |
| 3205 | 7.0 | 38.0 | 45.0 | 10.0 | 13.236 | O | 1 |
| 3206 | 6.0 | 39.0 | 45.0 | 10.0 | 12.818 | O | 1 |
| 3207 | 5.0 | 40.0 | 45.0 | 10.0 | 12.401 | O | 1 |
| 3208 | 4.0 | 41.0 | 45.0 | 10.0 | 11.983 | O | 1 |
| 3209 | 3.0 | 42.0 | 45.0 | 10.0 | 11.565 | O | 1 |
| 3210 | 2.0 | 43.0 | 45.0 | 10.0 | 11.147 | O | 1 |
| 3211 | 1.0 | 44.0 | 45.0 | 10.0 | 10.729 | O | 1 |
| 3212 | 0.0 | 45.0 | 45.0 | 10.0 | 10.311 | O | 1 |
| 3213 | 23.0 | 17.0 | 50.0 | 10.0 | 19.160 | X | 1 |
| 3214 | 22.6 | 17.4 | 50.0 | 10.0 | 19.017 | X | 1 |
| 3215 | 22.5 | 17.5 | 50.0 | 10.0 | 18.981 | O | 1 |
| 3216 | 22.0 | 18.0 | 50.0 | 10.0 | 18.803 | O | 1 |
| 3217 | 20.0 | 20.0 | 50.0 | 10.0 | 18.089 | O | 1 |
| 3218 | 15.0 | 25.0 | 50.0 | 10.0 | 16.305 | O | 1 |
| 3219 | 10.0 | 30.0 | 50.0 | 10.0 | 14.521 | O | 1 |
| 3220 | 9.0 | 31.0 | 50.0 | 10.0 | 14.112 | O | 1 |
| 3221 | 8.0 | 32.0 | 50.0 | 10.0 | 13.694 | O | 1 |
| 3222 | 7.0 | 33.0 | 50.0 | 10.0 | 13.276 | O | 1 |
| 3223 | 6.0 | 34.0 | 50.0 | 10.0 | 12.859 | O | 1 |
| 3224 | 5.0 | 35.0 | 50.0 | 10.0 | 12.441 | O | 1 |
| 3225 | 4.0 | 36.0 | 50.0 | 10.0 | 12.023 | O | 1 |

[Table 44]

| 3226 | 3.0 | 37.0 | 50.0 | 10.0 | 11.605 | O | 1 |
|---|---|---|---|---|---|---|---|
| 3227 | 2.0 | 38.0 | 50.0 | 10.0 | 11.187 | O | 1 |
| 3228 | 1.0 | 39.0 | 50.0 | 10.0 | 10.769 | O | 1 |
| 3229 | 0.0 | 40.0 | 50.0 | 10.0 | 10.351 | O | 1 |
| 3230 | 23.0 | 12.0 | 55.0 | 10.0 | 19.190 | X | 1 |
| 3231 | 22.5 | 12.5 | 55.0 | 10.0 | 19.011 | X | 1 |
| 3232 | 22.4 | 12.6 | 55.0 | 10.0 | 18.976 | O | 1 |
| 3233 | 22.0 | 13.0 | 55.0 | 10.0 | 18.833 | O | 1 |
| 3234 | 20.0 | 15.0 | 55.0 | 10.0 | 18.119 | O | 1 |
| 3235 | 15.0 | 20.0 | 55.0 | 10.0 | 16.335 | O | 1 |
| 3236 | 10.0 | 25.0 | 55.0 | 10.0 | 14.551 | O | 1 |
| 3237 | 9.0 | 26.0 | 55.0 | 10.0 | 14.152 | O | 1 |
| 3238 | 8.0 | 27.0 | 55.0 | 10.0 | 13.735 | O | 1 |
| 3239 | 7.0 | 28.0 | 55.0 | 10.0 | 13.317 | O | 1 |
| 3240 | 6.0 | 29.0 | 55.0 | 10.0 | 12.899 | O | 1 |
| 3241 | 5.0 | 30.0 | 55.0 | 10.0 | 12.481 | O | 1 |
| 3242 | 4.0 | 31.0 | 55.0 | 10.0 | 12.063 | O | 1 |
| 3243 | 3.0 | 32.0 | 55.0 | 10.0 | 11.645 | O | 1 |
| 3244 | 2.0 | 33.0 | 55.0 | 10.0 | 11.227 | O | 1 |
| 3245 | 1.0 | 34.0 | 55.0 | 10.0 | 10.809 | O | 1 |
| 3246 | 0.0 | 35.0 | 55.0 | 10.0 | 10.391 | O | 1 |
| 3247 | 23.0 | 7.0 | 60.0 | 10.0 | 19.220 | X | 1 |
| 3248 | 22.4 | 7.6 | 60.0 | 10.0 | 19.006 | X | 1 |
| 3249 | 22.3 | 7.7 | 60.0 | 10.0 | 18.970 | O | 1 |
| 3250 | 22.0 | 8.0 | 60.0 | 10.0 | 18.863 | O | 1 |
| 3251 | 20.0 | 10.0 | 60.0 | 10.0 | 18.149 | O | 1 |
| 3252 | 15.0 | 15.0 | 60.0 | 10.0 | 16.365 | O | 1 |
| 3253 | 10.0 | 20.0 | 60.0 | 10.0 | 14.581 | O | 1 |
| 3254 | 9.0 | 21.0 | 60.0 | 10.0 | 14.193 | O | 1 |
| 3255 | 8.0 | 22.0 | 60.0 | 10.0 | 13.775 | O | 1 |
| 3256 | 7.0 | 23.0 | 60.0 | 10.0 | 13.357 | O | 1 |
| 3257 | 6.0 | 24.0 | 60.0 | 10.0 | 12.939 | O | 1 |
| 3258 | 5.0 | 25.0 | 60.0 | 10.0 | 12.521 | O | 1 |
| 3259 | 4.0 | 26.0 | 60.0 | 10.0 | 12.103 | O | 1 |
| 3260 | 3.0 | 27.0 | 60.0 | 10.0 | 11.685 | O | 1 |
| 3261 | 2.0 | 28.0 | 60.0 | 10.0 | 11.267 | O | 1 |
| 3262 | 1.0 | 29.0 | 60.0 | 10.0 | 10.849 | O | 1 |
| 3263 | 0.0 | 30.0 | 60.0 | 10.0 | 10.431 | O | 1 |
| 3264 | 23.0 | 2.0 | 65.0 | 10.0 | 19.250 | X | 1 |
| 3265 | 22.3 | 2.7 | 65.0 | 10.0 | 19.000 | **X** | 1 |
| 3266 | 22.2 | 2.8 | 65.0 | 10.0 | 18.964 | O | 1 |
| 3267 | 22.0 | 3.0 | 65.0 | 10.0 | 18.893 | O | 1 |
| 3268 | 20.0 | 5.0 | 65.0 | 10.0 | 18.179 | O | 1 |
| 3269 | 15.0 | 10.0 | 65.0 | 10.0 | 16.395 | O | 1 |
| 3270 | 10.0 | 15.0 | 65.0 | 10.0 | 14.611 | O | 1 |
| 3271 | 9.0 | 16.0 | 65.0 | 10.0 | 14.233 | O | 1 |
| 3272 | 8.0 | 17.0 | 65.0 | 10.0 | 13.815 | O | 1 |
| 3273 | 7.0 | 18.0 | 65.0 | 10.0 | 13.397 | O | 1 |
| 3274 | 6.0 | 19.0 | 65.0 | 10.0 | 12.979 | O | 1 |
| 3275 | 5.0 | 20.0 | 65.0 | 10.0 | 12.561 | O | 1 |

[Table 45]

| 3276 | 4.0 | 21.0 | 65.0 | 10.0 | 12.143 | O | 1 |
|------|------|------|------|------|--------|---|---|
| 3277 | 3.0 | 22.0 | 65.0 | 10.0 | 11.725 | O | 1 |
| 3278 | 2.0 | 23.0 | 65.0 | 10.0 | 11.307 | O | 1 |
| 3279 | 1.0 | 24.0 | 65.0 | 10.0 | 10.889 | O | 1 |
| 3280 | 0.0 | 25.0 | 65.0 | 10.0 | 10.471 | O | 1 |
| 3281 | 24.0 | 51.0 | 5.0 | 20.0 | 19.247 | X | 1 |
| 3282 | 23.4 | 51.6 | 5.0 | 20.0 | 19.033 | X | 1 |
| 3283 | 23.3 | 51.7 | 5.0 | 20.0 | 18.998 | O | 1 |
| 3284 | 23.0 | 52.0 | 5.0 | 20.0 | 18.891 | O | 1 |
| 3285 | 20.0 | 55.0 | 5.0 | 20.0 | 17.820 | O | 1 |
| 3286 | 15.0 | 60.0 | 5.0 | 20.0 | 16.036 | O | 1 |
| 3287 | 10.0 | 65.0 | 5.0 | 20.0 | 14.190 | O | 1 |
| 3288 | 9.0 | 66.0 | 5.0 | 20.0 | 13.772 | O | 1 |
| 3289 | 8.0 | 67.0 | 5.0 | 20.0 | 13.354 | O | 1 |
| 3290 | 7.0 | 68.0 | 5.0 | 20.0 | 12.936 | O | 1 |
| 3291 | 6.0 | 69.0 | 5.0 | 20.0 | 12.518 | O | 1 |
| 3292 | 5.0 | 70.0 | 5.0 | 20.0 | 12.100 | O | 1 |
| 3293 | 4.0 | 71.0 | 5.0 | 20.0 | 11.682 | O | 1 |
| 3294 | 3.0 | 72.0 | 5.0 | 20.0 | 11.264 | O | 1 |
| 3295 | 2.0 | 73.0 | 5.0 | 20.0 | 10.847 | O | 1 |
| 3296 | 1.0 | 74.0 | 5.0 | 20.0 | 10.429 | O | 1 |
| 3297 | 0.0 | 75.0 | 5.0 | 20.0 | 10.011 | O | 1 |
| 3298 | 24.0 | 46.0 | 10.0 | 20.0 | 19.277 | X | 1 |
| 3299 | 23.3 | 46.7 | 10.0 | 20.0 | 19.028 | X | 1 |
| 3300 | 23.2 | 46.8 | 10.0 | 20.0 | 18.992 | O | 1 |
| 3301 | 23.0 | 47.0 | 10.0 | 20.0 | 18.921 | O | 1 |
| 3302 | 20.0 | 50.0 | 10.0 | 20.0 | 17.850 | O | 1 |
| 3303 | 15.0 | 55.0 | 10.0 | 20.0 | 16.066 | O | 1 |
| 3304 | 10.0 | 60.0 | 10.0 | 20.0 | 14.230 | O | 1 |
| 3305 | 9.0 | 61.0 | 10.0 | 20.0 | 13.812 | O | 1 |
| 3306 | 8.0 | 62.0 | 10.0 | 20.0 | 13.394 | O | 1 |
| 3307 | 7.0 | 63.0 | 10.0 | 20.0 | 12.976 | O | 1 |
| 3308 | 6.0 | 64.0 | 10.0 | 20.0 | 12.558 | O | 1 |
| 3309 | 5.0 | 65.0 | 10.0 | 20.0 | 12.140 | O | 1 |
| 3310 | 4.0 | 66.0 | 10.0 | 20.0 | 11.723 | O | 1 |
| 3311 | 3.0 | 67.0 | 10.0 | 20.0 | 11.305 | O | 1 |
| 3312 | 2.0 | 68.0 | 10.0 | 20.0 | 10.887 | O | 1 |
| 3313 | 1.0 | 69.0 | 10.0 | 20.0 | 10.469 | O | 1 |
| 3314 | 0.0 | 70.0 | 10.0 | 20.0 | 10.051 | O | 1 |
| 3315 | 24.0 | 41.0 | 15.0 | 20.0 | 19.307 | X | 1 |
| 3316 | 23.2 | 41.8 | 15.0 | 20.0 | 19.022 | X | 1 |
| 3317 | 23.1 | 41.9 | 15.0 | 20.0 | 18.986 | O | 1 |
| 3318 | 23.0 | 42.0 | 15.0 | 20.0 | 18.951 | O | 1 |
| 3319 | 20.0 | 45.0 | 15.0 | 20.0 | 17.880 | O | 1 |
| 3320 | 15.0 | 50.0 | 15.0 | 20.0 | 16.096 | O | 1 |
| 3321 | 10.0 | 55.0 | 15.0 | 20.0 | 14.270 | O | 1 |
| 3322 | 9.0 | 56.0 | 15.0 | 20.0 | 13.852 | O | 1 |
| 3323 | 8.0 | 57.0 | 15.0 | 20.0 | 13.434 | O | 1 |
| 3324 | 7.0 | 58.0 | 15.0 | 20.0 | 13.016 | O | 1 |
| 3325 | 6.0 | 59.0 | 15.0 | 20.0 | 12.599 | O | 1 |

[Table 46]

| 3326 | 5.0 | 60.0 | 15.0 | 20.0 | 12.181 | O | 1 |
|---|---|---|---|---|---|---|---|
| 3327 | 4.0 | 61.0 | 15.0 | 20.0 | 11.763 | O | 1 |
| 3328 | 3.0 | 62.0 | 15.0 | 20.0 | 11.345 | O | 1 |
| 3329 | 2.0 | 63.0 | 15.0 | 20.0 | 10.927 | O | 1 |
| 3330 | 1.0 | 64.0 | 15.0 | 20.0 | 10.509 | O | 1 |
| 3331 | 0.0 | 65.0 | 15.0 | 20.0 | 10.091 | O | 1 |
| 3332 | 24.0 | 36.0 | 20.0 | 20.0 | 19.337 | X | 1 |
| 3333 | 23.1 | 36.9 | 20.0 | 20.0 | 19.016 | X | 1 |
| 3334 | 23.0 | 37.0 | 20.0 | 20.0 | 18.981 | O | 1 |
| 3335 | 20.0 | 40.0 | 20.0 | 20.0 | 17.910 | O | 1 |
| 3336 | 15.0 | 45.0 | 20.0 | 20.0 | 16.126 | O | 1 |
| 3337 | 10.0 | 50.0 | 20.0 | 20.0 | 14.310 | O | 1 |
| 3338 | 9.0 | 51.0 | 20.0 | 20.0 | 13.892 | O | 1 |
| 3339 | 8.0 | 52.0 | 20.0 | 20.0 | 13.474 | O | 1 |
| 3340 | 7.0 | 53.0 | 20.0 | 20.0 | 13.057 | O | 1 |
| 3341 | 6.0 | 54.0 | 20.0 | 20.0 | 12.639 | O | 1 |
| 3342 | 5.0 | 55.0 | 20.0 | 20.0 | 12.221 | O | 1 |
| 3343 | 4.0 | 56.0 | 20.0 | 20.0 | 11.803 | O | 1 |
| 3344 | 3.0 | 57.0 | 20.0 | 20.0 | 11.385 | O | 1 |
| 3345 | 2.0 | 58.0 | 20.0 | 20.0 | 10.967 | O | 1 |
| 3346 | 1.0 | 59.0 | 20.0 | 20.0 | 10.549 | O | 1 |
| 3347 | 0.0 | 60.0 | 20.0 | 20.0 | 10.131 | O | 1 |
| 3348 | 23.0 | 32.0 | 25.0 | 20.0 | 19.010 | X | 1 |
| 3349 | 22.9 | 32.1 | 25.0 | 20.0 | 18.975 | O | 1 |
| 3350 | 22.0 | 33.0 | 25.0 | 20.0 | 18.654 | O | 1 |
| 3351 | 20.0 | 35.0 | 25.0 | 20.0 | 17.940 | O | 1 |
| 3352 | 15.0 | 40.0 | 25.0 | 20.0 | 16.156 | O | 1 |
| 3353 | 10.0 | 45.0 | 25.0 | 20.0 | 14.350 | O | 1 |
| 3354 | 9.0 | 46.0 | 25.0 | 20.0 | 13.933 | O | 1 |
| 3355 | 8.0 | 47.0 | 25.0 | 20.0 | 13.515 | O | 1 |
| 3356 | 7.0 | 48.0 | 25.0 | 20.0 | 13.097 | O | 1 |
| 3357 | 6.0 | 49.0 | 25.0 | 20.0 | 12.679 | O | 1 |
| 3358 | 5.0 | 50.0 | 25.0 | 20.0 | 12.261 | O | 1 |
| 3359 | 4.0 | 51.0 | 25.0 | 20.0 | 11.843 | O | 1 |
| 3360 | 3.0 | 52.0 | 25.0 | 20.0 | 11.425 | O | 1 |
| 3361 | 2.0 | 53.0 | 25.0 | 20.0 | 11.007 | O | 1 |
| 3362 | 1.0 | 54.0 | 25.0 | 20.0 | 10.589 | O | 1 |
| 3363 | 0.0 | 55.0 | 25.0 | 20.0 | 10.171 | O | 1 |
| 3364 | 23.0 | 27.0 | 30.0 | 20.0 | 19.040 | X | 1 |
| 3365 | 22.9 | 27.1 | 30.0 | 20.0 | 19.005 | X | 1 |
| 3366 | 22.8 | 27.2 | 30.0 | 20.0 | 18.969 | O | 1 |
| 3367 | 22.0 | 28.0 | 30.0 | 20.0 | 18.684 | O | 1 |
| 3368 | 20.0 | 30.0 | 30.0 | 20.0 | 17.970 | O | 1 |
| 3369 | 15.0 | 35.0 | 30.0 | 20.0 | 16.186 | O | 1 |
| 3370 | 10.0 | 40.0 | 30.0 | 20.0 | 14.391 | O | 1 |
| 3371 | 9.0 | 41.0 | 30.0 | 20.0 | 13.973 | O | 1 |
| 3372 | 8.0 | 42.0 | 30.0 | 20.0 | 13.555 | O | 1 |
| 3373 | 7.0 | 43.0 | 30.0 | 20.0 | 13.137 | O | 1 |
| 3374 | 6.0 | 44.0 | 30.0 | 20.0 | 12.719 | O | 1 |
| 3375 | 5.0 | 45.0 | 30.0 | 20.0 | 12.301 | O | 1 |

[Table 47]

| 3376 | 4.0 | 46.0 | 30.0 | 20.0 | 11.883 | O | 1 |
|---|---|---|---|---|---|---|---|
| 3377 | 3.0 | 47.0 | 30.0 | 20.0 | 11.465 | O | 1 |
| 3378 | 2.0 | 48.0 | 30.0 | 20.0 | 11.047 | O | 1 |
| 3379 | 1.0 | 49.0 | 30.0 | 20.0 | 10.629 | O | 1 |
| 3380 | 0.0 | 50.0 | 30.0 | 20.0 | 10.211 | O | 1 |
| 3381 | 23.0 | 22.0 | 35.0 | 20.0 | 19.070 | X | 1 |
| 3382 | 22.9 | 22.1 | 35.0 | 20.0 | 19.035 | X | 1 |
| 3383 | 22.8 | 22.2 | 35.0 | 20.0 | 18.999 | O | 1 |
| 3384 | 22.0 | 23.0 | 35.0 | 20.0 | 18.714 | O | 1 |
| 3385 | 20.0 | 25.0 | 35.0 | 20.0 | 18.000 | O | 1 |
| 3386 | 15.0 | 30.0 | 35.0 | 20.0 | 16.216 | O | 1 |
| 3387 | 10.0 | 35.0 | 35.0 | 20.0 | 14.431 | O | 1 |
| 3388 | 9.0 | 36.0 | 35.0 | 20.0 | 14.013 | O | 1 |
| 3389 | 8.0 | 37.0 | 35.0 | 20.0 | 13.595 | O | 1 |
| 3390 | 7.0 | 38.0 | 35.0 | 20.0 | 13.177 | O | 1 |
| 3391 | 6.0 | 39.0 | 35.0 | 20.0 | 12.759 | O | 1 |
| 3392 | 5.0 | 40.0 | 35.0 | 20.0 | 12.341 | O | 1 |
| 3393 | 4.0 | 41.0 | 35.0 | 20.0 | 11.923 | O | 1 |
| 3394 | 3.0 | 42.0 | 35.0 | 20.0 | 11.505 | O | 1 |
| 3395 | 2.0 | 43.0 | 35.0 | 20.0 | 11.087 | O | 1 |
| 3396 | 1.0 | 44.0 | 35.0 | 20.0 | 10.669 | O | 1 |
| 3397 | 0.0 | 45.0 | 35.0 | 20.0 | 10.252 | O | 1 |
| 3398 | 23.0 | 17.0 | 40.0 | 20.0 | 19.100 | X | 1 |
| 3399 | 22.8 | 17.2 | 40.0 | 20.0 | 19.029 | X | 1 |
| 3400 | 22.7 | 17.3 | 40.0 | 20.0 | 18.993 | O | 1 |
| 3401 | 22.0 | 18.0 | 40.0 | 20.0 | 18.744 | O | 1 |
| 3402 | 20.0 | 20.0 | 40.0 | 20.0 | 18.030 | O | 1 |
| 3403 | 15.0 | 25.0 | 40.0 | 20.0 | 16.246 | O | 1 |
| 3404 | 10.0 | 30.0 | 40.0 | 20.0 | 14.462 | O | 1 |
| 3405 | 9.0 | 31.0 | 40.0 | 20.0 | 14.053 | O | 1 |
| 3406 | 8.0 | 32.0 | 40.0 | 20.0 | 13.635 | O | 1 |
| 3407 | 7.0 | 33.0 | 40.0 | 20.0 | 13.217 | O | 1 |
| 3408 | 6.0 | 34.0 | 40.0 | 20.0 | 12.799 | O | 1 |
| 3409 | 5.0 | 35.0 | 40.0 | 20.0 | 12.381 | O | 1 |
| 3410 | 4.0 | 36.0 | 40.0 | 20.0 | 11.963 | O | 1 |
| 3411 | 3.0 | 37.0 | 40.0 | 20.0 | 11.545 | O | 1 |
| 3412 | 2.0 | 38.0 | 40.0 | 20.0 | 11.128 | O | 1 |
| 3413 | 1.0 | 39.0 | 40.0 | 20.0 | 10.710 | O | 1 |
| 3414 | 0.0 | 40.0 | 40.0 | 20.0 | 10.292 | O | 1 |
| 3415 | 23.0 | 12.0 | 45.0 | 20.0 | 19.130 | X | 1 |
| 3416 | 22.7 | 12.3 | 45.0 | 20.0 | 19.023 | X | 1 |
| 3417 | 22.6 | 12.4 | 45.0 | 20.0 | 18.988 | O | 1 |
| 3418 | 22.0 | 13.0 | 45.0 | 20.0 | 18.774 | O | 1 |
| 3419 | 20.0 | 15.0 | 45.0 | 20.0 | 18.060 | O | 1 |
| 3420 | 15.0 | 20.0 | 45.0 | 20.0 | 16.276 | O | 1 |
| 3421 | 10.0 | 25.0 | 45.0 | 20.0 | 14.492 | O | 1 |
| 3422 | 9.0 | 26.0 | 45.0 | 20.0 | 14.093 | O | 1 |
| 3423 | 8.0 | 27.0 | 45.0 | 20.0 | 13.675 | O | 1 |
| 3424 | 7.0 | 28.0 | 45.0 | 20.0 | 13.257 | O | 1 |
| 3425 | 6.0 | 29.0 | 45.0 | 20.0 | 12.839 | O | 1 |

[Table 48]

| 3426 | 5.0 | 30.0 | 45.0 | 20.0 | 12.421 | O | 1 |
|---|---|---|---|---|---|---|---|
| 3427 | 4.0 | 31.0 | 45.0 | 20.0 | 12.003 | O | 1 |
| 3428 | 3.0 | 32.0 | 45.0 | 20.0 | 11.586 | O | 1 |
| 3429 | 2.0 | 33.0 | 45.0 | 20.0 | 11.168 | O | 1 |
| 3430 | 1.0 | 34.0 | 45.0 | 20.0 | 10.750 | O | 1 |
| 3431 | 0.0 | 35.0 | 45.0 | 20.0 | 10.332 | O | 1 |
| 3432 | 23.0 | 7.0 | 50.0 | 20.0 | 19.160 | X | 1 |
| 3433 | 22.6 | 7.4 | 50.0 | 20.0 | 19.018 | X | 1 |
| 3434 | 22.5 | 7.5 | 50.0 | 20.0 | 18.982 | O | 1 |
| 3435 | 22.0 | 8.0 | 50.0 | 20.0 | 18.804 | O | 1 |
| 3436 | 20.0 | 10.0 | 50.0 | 20.0 | 18.090 | O | 1 |
| 3437 | 15.0 | 15.0 | 50.0 | 20.0 | 16.306 | O | 1 |
| 3438 | 10.0 | 20.0 | 50.0 | 20.0 | 14.522 | O | 1 |
| 3439 | 9.0 | 21.0 | 50.0 | 20.0 | 14.133 | O | 1 |
| 3440 | 8.0 | 22.0 | 50.0 | 20.0 | 13.715 | O | 1 |
| 3441 | 7.0 | 23.0 | 50.0 | 20.0 | 13.297 | O | 1 |
| 3442 | 6.0 | 24.0 | 50.0 | 20.0 | 12.879 | O | 1 |
| 3443 | 5.0 | 25.0 | 50.0 | 20.0 | 12.462 | O | 1 |
| 3444 | 4.0 | 26.0 | 50.0 | 20.0 | 12.044 | O | 1 |
| 3445 | 3.0 | 27.0 | 50.0 | 20.0 | 11.626 | O | 1 |
| 3446 | 2.0 | 28.0 | 50.0 | 20.0 | 11.208 | O | 1 |
| 3447 | 1.0 | 29.0 | 50.0 | 20.0 | 10.790 | O | 1 |
| 3448 | 0.0 | 30.0 | 50.0 | 20.0 | 10.372 | O | 1 |
| 3449 | 23.0 | 2.0 | 55.0 | 20.0 | 19.190 | X | 1 |
| 3450 | 22.5 | 2.5 | 55.0 | 20.0 | 19.012 | X | 1 |
| 3451 | 22.4 | 2.6 | 55.0 | 20.0 | 18.976 | O | 1 |
| 3452 | 22.0 | 3.0 | 55.0 | 20.0 | 18.834 | O | 1 |
| 3453 | 20.0 | 5.0 | 55.0 | 20.0 | 18.120 | O | 1 |
| 3454 | 15.0 | 10.0 | 55.0 | 20.0 | 16.336 | O | 1 |
| 3455 | 10.0 | 15.0 | 55.0 | 20.0 | 14.552 | O | 1 |
| 3456 | 9.0 | 16.0 | 55.0 | 20.0 | 14.173 | O | 1 |
| 3457 | 8.0 | 17.0 | 55.0 | 20.0 | 13.755 | O | 1 |
| 3458 | 7.0 | 18.0 | 55.0 | 20.0 | 13.338 | O | 1 |
| 3459 | 6.0 | 19.0 | 55.0 | 20.0 | 12.920 | O | 1 |
| 3460 | 5.0 | 20.0 | 55.0 | 20.0 | 12.502 | O | 1 |
| 3461 | 4.0 | 21.0 | 55.0 | 20.0 | 12.084 | O | 1 |
| 3462 | 3.0 | 22.0 | 55.0 | 20.0 | 11.666 | O | 1 |
| 3463 | 2.0 | 23.0 | 55.0 | 20.0 | 11.248 | O | 1 |
| 3464 | 1.0 | 24.0 | 55.0 | 20.0 | 10.830 | O | 1 |
| 3465 | 0.0 | 25.0 | 55.0 | 20.0 | 10.412 | O | 1 |
| 3466 | 24.0 | 41.0 | 5.0 | 30.0 | 19.248 | X | 1 |
| 3467 | 23.4 | 41.6 | 5.0 | 30.0 | 19.034 | X | 1 |
| 3468 | 23.3 | 41.7 | 5.0 | 30.0 | 18.998 | O | 1 |
| 3469 | 23.0 | 42.0 | 5.0 | 30.0 | 18.891 | O | 1 |
| 3470 | 20.0 | 45.0 | 5.0 | 30.0 | 17.821 | O | 1 |
| 3471 | 15.0 | 50.0 | 5.0 | 30.0 | 16.037 | O | 1 |
| 3472 | 10.0 | 55.0 | 5.0 | 30.0 | 14.211 | O | 1 |
| 3473 | 9.0 | 56.0 | 5.0 | 30.0 | 13.793 | O | 1 |
| 3474 | 8.0 | 57.0 | 5.0 | 30.0 | 13.375 | O | 1 |
| 3475 | 7.0 | 58.0 | 5.0 | 30.0 | 12.957 | O | 1 |

[Table 49]

| 3476 | 6.0 | 59.0 | 5.0 | 30.0 | 12.539 | O | 1 |
|---|---|---|---|---|---|---|---|
| 3477 | 5.0 | 60.0 | 5.0 | 30.0 | 12.121 | O | 1 |
| 3478 | 4.0 | 61.0 | 5.0 | 30.0 | 11.703 | O | 1 |
| 3479 | 3.0 | 62.0 | 5.0 | 30.0 | 11.285 | O | 1 |
| 3480 | 2.0 | 63.0 | 5.0 | 30.0 | 10.867 | O | 1 |
| 3481 | 1.0 | 64.0 | 5.0 | 30.0 | 10.450 | O | 1 |
| 3482 | 0.0 | 65.0 | 5.0 | 30.0 | 10.032 | O | 1 |
| 3483 | 24.0 | 36.0 | 10.0 | 30.0 | 19.278 | X | 1 |
| 3484 | 23.3 | 36.7 | 10.0 | 30.0 | 19.028 | X | 1 |
| 3485 | 23.2 | 36.8 | 10.0 | 30.0 | 18.993 | O | 1 |
| 3486 | 23.0 | 37.0 | 10.0 | 30.0 | 18.921 | O | 1 |
| 3487 | 20.0 | 40.0 | 10.0 | 30.0 | 17.851 | O | 1 |
| 3488 | 15.0 | 45.0 | 10.0 | 30.0 | 16.067 | O | 1 |
| 3489 | 10.0 | 50.0 | 10.0 | 30.0 | 14.251 | O | 1 |
| 3490 | 9.0 | 51.0 | 10.0 | 30.0 | 13.833 | O | 1 |
| 3491 | 8.0 | 52.0 | 10.0 | 30.0 | 13.415 | O | 1 |
| 3492 | 7.0 | 53.0 | 10.0 | 30.0 | 12.997 | O | 1 |
| 3493 | 6.0 | 54.0 | 10.0 | 30.0 | 12.579 | O | 1 |
| 3494 | 5.0 | 55.0 | 10.0 | 30.0 | 12.161 | O | 1 |
| 3495 | 4.0 | 56.0 | 10.0 | 30.0 | 11.743 | O | 1 |
| 3496 | 3.0 | 57.0 | 10.0 | 30.0 | 11.326 | O | 1 |
| 3497 | 2.0 | 58.0 | 10.0 | 30.0 | 10.908 | O | 1 |
| 3498 | 1.0 | 59.0 | 10.0 | 30.0 | 10.490 | O | 1 |
| 3499 | 0.0 | 60.0 | 10.0 | 30.0 | 10.072 | O | 1 |
| 3500 | 24.0 | 31.0 | 15.0 | 30.0 | 19.308 | X | 1 |
| 3501 | 23.2 | 31.8 | 15.0 | 30.0 | 19.022 | X | 1 |
| 3502 | 23.1 | 31.9 | 15.0 | 30.0 | 18.987 | O | 1 |
| 3503 | 23.0 | 32.0 | 15.0 | 30.0 | 18.951 | O | 1 |
| 3504 | 20.0 | 35.0 | 15.0 | 30.0 | 17.881 | O | 1 |
| 3505 | 15.0 | 40.0 | 15.0 | 30.0 | 16.097 | O | 1 |
| 3506 | 10.0 | 45.0 | 15.0 | 30.0 | 14.291 | O | 1 |
| 3507 | 9.0 | 46.0 | 15.0 | 30.0 | 13.873 | O | 1 |
| 3508 | 8.0 | 47.0 | 15.0 | 30.0 | 13.455 | O | 1 |
| 3509 | 7.0 | 48.0 | 15.0 | 30.0 | 13.037 | O | 1 |
| 3510 | 6.0 | 49.0 | 15.0 | 30.0 | 12.619 | O | 1 |
| 3511 | 5.0 | 50.0 | 15.0 | 30.0 | 12.202 | O | 1 |
| 3512 | 4.0 | 51.0 | 15.0 | 30.0 | 11.784 | O | 1 |
| 3513 | 3.0 | 52.0 | 15.0 | 30.0 | 11.366 | O | 1 |
| 3514 | 2.0 | 53.0 | 15.0 | 30.0 | 10.948 | O | 1 |
| 3515 | 1.0 | 54.0 | 15.0 | 30.0 | 10.530 | O | 1 |
| 3516 | 0.0 | 55.0 | 15.0 | 30.0 | 10.112 | O | 1 |
| 3517 | 24.0 | 26.0 | 20.0 | 30.0 | 19.338 | X | 1 |
| 3518 | 23.1 | 26.9 | 20.0 | 30.0 | 19.017 | X | 1 |
| 3519 | 23.0 | 27.0 | 20.0 | 30.0 | 18.981 | O | 1 |
| 3520 | 20.0 | 30.0 | 20.0 | 30.0 | 17.911 | O | 1 |
| 3521 | 15.0 | 35.0 | 20.0 | 30.0 | 16.127 | O | 1 |
| 3522 | 10.0 | 40.0 | 20.0 | 30.0 | 14.331 | O | 1 |
| 3523 | 9.0 | 41.0 | 20.0 | 30.0 | 13.913 | O | 1 |
| 3524 | 8.0 | 42.0 | 20.0 | 30.0 | 13.495 | O | 1 |
| 3525 | 7.0 | 43.0 | 20.0 | 30.0 | 13.077 | O | 1 |

[Table 50]

| 3526 | 6.0 | 44.0 | 20.0 | 30.0 | 12.660 | O | 1 |
|---|---|---|---|---|---|---|---|
| 3527 | 5.0 | 45.0 | 20.0 | 30.0 | 12.242 | O | 1 |
| 3528 | 4.0 | 46.0 | 20.0 | 30.0 | 11.824 | O | 1 |
| 3529 | 3.0 | 47.0 | 20.0 | 30.0 | 11.406 | O | 1 |
| 3530 | 2.0 | 48.0 | 20.0 | 30.0 | 10.988 | O | 1 |
| 3531 | 1.0 | 49.0 | 20.0 | 30.0 | 10.570 | O | 1 |
| 3532 | 0.0 | 50.0 | 20.0 | 30.0 | 10.152 | O | 1 |
| 3533 | 23.0 | 22.0 | 25.0 | 30.0 | 19.011 | X | 1 |
| 3534 | 22.9 | 22.1 | 25.0 | 30.0 | 18.975 | O | 1 |
| 3535 | 22.0 | 23.0 | 25.0 | 30.0 | 18.654 | O | 1 |
| 3536 | 20.0 | 25.0 | 25.0 | 30.0 | 17.941 | O | 1 |
| 3537 | 15.0 | 30.0 | 25.0 | 30.0 | 16.157 | O | 1 |
| 3538 | 10.0 | 35.0 | 25.0 | 30.0 | 14.371 | O | 1 |
| 3539 | 9.0 | 36.0 | 25.0 | 30.0 | 13.953 | O | 1 |
| 3540 | 8.0 | 37.0 | 25.0 | 30.0 | 13.536 | O | 1 |
| 3541 | 7.0 | 38.0 | 25.0 | 30.0 | 13.118 | O | 1 |
| 3542 | 6.0 | 39.0 | 25.0 | 30.0 | 12.700 | O | 1 |
| 3543 | 5.0 | 40.0 | 25.0 | 30.0 | 12.282 | O | 1 |
| 3544 | 4.0 | 41.0 | 25.0 | 30.0 | 11.864 | O | 1 |
| 3545 | 3.0 | 42.0 | 25.0 | 30.0 | 11.446 | O | 1 |
| 3546 | 2.0 | 43.0 | 25.0 | 30.0 | 11.028 | O | 1 |
| 3547 | 1.0 | 44.0 | 25.0 | 30.0 | 10.610 | O | 1 |
| 3548 | 0.0 | 45.0 | 25.0 | 30.0 | 10.192 | O | 1 |
| 3549 | 23.0 | 17.0 | 30.0 | 30.0 | 19.041 | X | 1 |
| 3550 | 22.9 | 17.1 | 30.0 | 30.0 | 19.005 | X | 1 |
| 3551 | 22.8 | 17.2 | 30.0 | 30.0 | 18.970 | O | 1 |
| 3552 | 22.0 | 18.0 | 30.0 | 30.0 | 18.684 | O | 1 |
| 3553 | 20.0 | 20.0 | 30.0 | 30.0 | 17.971 | O | 1 |
| 3554 | 15.0 | 25.0 | 30.0 | 30.0 | 16.187 | O | 1 |
| 3555 | 10.0 | 30.0 | 30.0 | 30.0 | 14.402 | O | 1 |
| 3556 | 9.0 | 31.0 | 30.0 | 30.0 | 13.994 | O | 1 |
| 3557 | 8.0 | 32.0 | 30.0 | 30.0 | 13.576 | O | 1 |
| 3558 | 7.0 | 33.0 | 30.0 | 30.0 | 13.158 | O | 1 |
| 3559 | 6.0 | 34.0 | 30.0 | 30.0 | 12.740 | O | 1 |
| 3560 | 5.0 | 35.0 | 30.0 | 30.0 | 12.322 | O | 1 |
| 3561 | 4.0 | 36.0 | 30.0 | 30.0 | 11.904 | O | 1 |
| 3562 | 3.0 | 37.0 | 30.0 | 30.0 | 11.486 | O | 1 |
| 3563 | 2.0 | 38.0 | 30.0 | 30.0 | 11.068 | O | 1 |
| 3564 | 1.0 | 39.0 | 30.0 | 30.0 | 10.650 | O | 1 |
| 3565 | 0.0 | 40.0 | 30.0 | 30.0 | 10.232 | O | 1 |
| 3566 | 23.0 | 12.0 | 35.0 | 30.0 | 19.071 | X | 1 |
| 3567 | 22.8 | 12.2 | 35.0 | 30.0 | 19.000 | **X** | 1 |
| 3568 | 22.7 | 12.3 | 35.0 | 30.0 | 18.964 | O | 1 |
| 3569 | 22.0 | 13.0 | 35.0 | 30.0 | 18.714 | O | 1 |
| 3570 | 20.0 | 15.0 | 35.0 | 30.0 | 18.001 | O | 1 |
| 3571 | 15.0 | 20.0 | 35.0 | 30.0 | 16.216 | O | 1 |
| 3572 | 10.0 | 25.0 | 35.0 | 30.0 | 14.432 | O | 1 |
| 3573 | 9.0 | 26.0 | 35.0 | 30.0 | 14.034 | O | 1 |
| 3574 | 8.0 | 27.0 | 35.0 | 30.0 | 13.616 | O | 1 |
| 3575 | 7.0 | 28.0 | 35.0 | 30.0 | 13.198 | O | 1 |

[Table 51]

| 3576 | 6.0 | 29.0 | 35.0 | 30.0 | 12.780 | O | 1 |
|------|------|------|------|------|--------|---|---|
| 3577 | 5.0 | 30.0 | 35.0 | 30.0 | 12.362 | O | 1 |
| 3578 | 4.0 | 31.0 | 35.0 | 30.0 | 11.944 | O | 1 |
| 3579 | 3.0 | 32.0 | 35.0 | 30.0 | 11.526 | O | 1 |
| 3580 | 2.0 | 33.0 | 35.0 | 30.0 | 11.108 | O | 1 |
| 3581 | 1.0 | 34.0 | 35.0 | 30.0 | 10.690 | O | 1 |
| 3582 | 0.0 | 35.0 | 35.0 | 30.0 | 10.272 | O | 1 |
| 3583 | 23.0 | 7.0 | 40.0 | 30.0 | 19.101 | X | 1 |
| 3584 | 22.8 | 7.2 | 40.0 | 30.0 | 19.030 | X | 1 |
| 3585 | 22.7 | 7.3 | 40.0 | 30.0 | 18.994 | O | 1 |
| 3586 | 22.0 | 8.0 | 40.0 | 30.0 | 18.744 | O | 1 |
| 3587 | 20.0 | 10.0 | 40.0 | 30.0 | 18.031 | O | 1 |
| 3588 | 15.0 | 15.0 | 40.0 | 30.0 | 16.246 | O | 1 |
| 3589 | 10.0 | 20.0 | 40.0 | 30.0 | 14.462 | O | 1 |
| 3590 | 9.0 | 21.0 | 40.0 | 30.0 | 14.074 | O | 1 |
| 3591 | 8.0 | 22.0 | 40.0 | 30.0 | 13.656 | O | 1 |
| 3592 | 7.0 | 23.0 | 40.0 | 30.0 | 13.238 | O | 1 |
| 3593 | 6.0 | 24.0 | 40.0 | 30.0 | 12.820 | O | 1 |
| 3594 | 5.0 | 25.0 | 40.0 | 30.0 | 12.402 | O | 1 |
| 3595 | 4.0 | 26.0 | 40.0 | 30.0 | 11.984 | O | 1 |
| 3596 | 3.0 | 27.0 | 40.0 | 30.0 | 11.566 | O | 1 |
| 3597 | 2.0 | 28.0 | 40.0 | 30.0 | 11.148 | O | 1 |
| 3598 | 1.0 | 29.0 | 40.0 | 30.0 | 10.731 | O | 1 |
| 3599 | 0.0 | 30.0 | 40.0 | 30.0 | 10.313 | O | 1 |
| 3600 | 23.0 | 2.0 | 45.0 | 30.0 | 19.131 | X | 1 |
| 3601 | 22.7 | 2.3 | 45.0 | 30.0 | 19.024 | X | 1 |
| 3602 | 22.6 | 2.4 | 45.0 | 30.0 | 18.988 | O | 1 |
| 3603 | 22.0 | 3.0 | 45.0 | 30.0 | 18.774 | O | 1 |
| 3604 | 20.0 | 5.0 | 45.0 | 30.0 | 18.061 | O | 1 |
| 3605 | 15.0 | 10.0 | 45.0 | 30.0 | 16.276 | O | 1 |
| 3606 | 10.0 | 15.0 | 45.0 | 30.0 | 14.492 | O | 1 |
| 3607 | 9.0 | 16.0 | 45.0 | 30.0 | 14.114 | O | 1 |
| 3608 | 8.0 | 17.0 | 45.0 | 30.0 | 13.696 | O | 1 |
| 3609 | 7.0 | 18.0 | 45.0 | 30.0 | 13.278 | O | 1 |
| 3610 | 6.0 | 19.0 | 45.0 | 30.0 | 12.860 | O | 1 |
| 3611 | 5.0 | 20.0 | 45.0 | 30.0 | 12.442 | O | 1 |
| 3612 | 4.0 | 21.0 | 45.0 | 30.0 | 12.024 | O | 1 |
| 3613 | 3.0 | 22.0 | 45.0 | 30.0 | 11.606 | O | 1 |
| 3614 | 2.0 | 23.0 | 45.0 | 30.0 | 11.189 | O | 1 |
| 3615 | 1.0 | 24.0 | 45.0 | 30.0 | 10.771 | O | 1 |
| 3616 | 0.0 | 25.0 | 45.0 | 30.0 | 10.353 | O | 1 |
| 3617 | 24.0 | 31.0 | 5.0 | 40.0 | 19.249 | X | 1 |
| 3618 | 23.4 | 31.6 | 5.0 | 40.0 | 19.034 | X | 1 |
| 3619 | 23.3 | 31.7 | 5.0 | 40.0 | 18.999 | O | 1 |
| 3620 | 23.0 | 32.0 | 5.0 | 40.0 | 18.892 | O | 1 |
| 3621 | 20.0 | 35.0 | 5.0 | 40.0 | 17.821 | O | 1 |
| 3622 | 15.0 | 40.0 | 5.0 | 40.0 | 16.037 | O | 1 |
| 3623 | 10.0 | 45.0 | 5.0 | 40.0 | 14.232 | O | 1 |
| 3624 | 9.0 | 46.0 | 5.0 | 40.0 | 13.814 | O | 1 |
| 3625 | 8.0 | 47.0 | 5.0 | 40.0 | 13.396 | O | 1 |

[Table 52]

| 3626 | 7.0 | 48.0 | 5.0 | 40.0 | 12.978 | O | 1 |
|------|------|------|------|------|--------|---|---|
| 3627 | 6.0 | 49.0 | 5.0 | 40.0 | 12.560 | O | 1 |
| 3628 | 5.0 | 50.0 | 5.0 | 40.0 | 12.142 | O | 1 |
| 3629 | 4.0 | 51.0 | 5.0 | 40.0 | 11.724 | O | 1 |
| 3630 | 3.0 | 52.0 | 5.0 | 40.0 | 11.306 | O | 1 |
| 3631 | 2.0 | 53.0 | 5.0 | 40.0 | 10.888 | O | 1 |
| 3632 | 1.0 | 54.0 | 5.0 | 40.0 | 10.470 | O | 1 |
| 3633 | 0.0 | 55.0 | 5.0 | 40.0 | 10.053 | O | 1 |
| 3634 | 24.0 | 26.0 | 10.0 | 40.0 | 19.279 | X | 1 |
| 3635 | 23.3 | 26.7 | 10.0 | 40.0 | 19.029 | X | 1 |
| 3636 | 23.2 | 26.8 | 10.0 | 40.0 | 18.993 | O | 1 |
| 3637 | 23.0 | 27.0 | 10.0 | 40.0 | 18.922 | O | 1 |
| 3638 | 20.0 | 30.0 | 10.0 | 40.0 | 17.851 | O | 1 |
| 3639 | 15.0 | 35.0 | 10.0 | 40.0 | 16.067 | O | 1 |
| 3640 | 10.0 | 40.0 | 10.0 | 40.0 | 14.272 | O | 1 |
| 3641 | 9.0 | 41.0 | 10.0 | 40.0 | 13.854 | O | 1 |
| 3642 | 8.0 | 42.0 | 10.0 | 40.0 | 13.436 | O | 1 |
| 3643 | 7.0 | 43.0 | 10.0 | 40.0 | 13.018 | O | 1 |
| 3644 | 6.0 | 44.0 | 10.0 | 40.0 | 12.600 | O | 1 |
| 3645 | 5.0 | 45.0 | 10.0 | 40.0 | 12.182 | O | 1 |
| 3646 | 4.0 | 46.0 | 10.0 | 40.0 | 11.764 | O | 1 |
| 3647 | 3.0 | 47.0 | 10.0 | 40.0 | 11.346 | O | 1 |
| 3648 | 2.0 | 48.0 | 10.0 | 40.0 | 10.929 | O | 1 |
| 3649 | 1.0 | 49.0 | 10.0 | 40.0 | 10.511 | O | 1 |
| 3650 | 0.0 | 50.0 | 10.0 | 40.0 | 10.093 | O | 1 |
| 3651 | 24.0 | 21.0 | 15.0 | 40.0 | 19.309 | X | 1 |
| 3652 | 23.2 | 21.8 | 15.0 | 40.0 | 19.023 | X | 1 |
| 3653 | 23.1 | 21.9 | 15.0 | 40.0 | 18.987 | O | 1 |
| 3654 | 23.0 | 22.0 | 15.0 | 40.0 | 18.952 | O | 1 |
| 3655 | 20.0 | 25.0 | 15.0 | 40.0 | 17.881 | O | 1 |
| 3656 | 15.0 | 30.0 | 15.0 | 40.0 | 16.097 | O | 1 |
| 3657 | 10.0 | 35.0 | 15.0 | 40.0 | 14.312 | O | 1 |
| 3658 | 9.0 | 36.0 | 15.0 | 40.0 | 13.894 | O | 1 |
| 3659 | 8.0 | 37.0 | 15.0 | 40.0 | 13.476 | O | 1 |
| 3660 | 7.0 | 38.0 | 15.0 | 40.0 | 13.058 | O | 1 |
| 3661 | 6.0 | 39.0 | 15.0 | 40.0 | 12.640 | O | 1 |
| 3662 | 5.0 | 40.0 | 15.0 | 40.0 | 12.222 | O | 1 |
| 3663 | 4.0 | 41.0 | 15.0 | 40.0 | 11.804 | O | 1 |
| 3664 | 3.0 | 42.0 | 15.0 | 40.0 | 11.387 | O | 1 |
| 3665 | 2.0 | 43.0 | 15.0 | 40.0 | 10.969 | O | 1 |
| 3666 | 1.0 | 44.0 | 15.0 | 40.0 | 10.551 | O | 1 |
| 3667 | 0.0 | 45.0 | 15.0 | 40.0 | 10.133 | O | 1 |
| 3668 | 24.0 | 16.0 | 20.0 | 40.0 | 19.338 | X | 1 |
| 3669 | 23.1 | 16.9 | 20.0 | 40.0 | 19.017 | X | 1 |
| 3670 | 23.0 | 17.0 | 20.0 | 40.0 | 18.982 | O | 1 |
| 3671 | 20.0 | 20.0 | 20.0 | 40.0 | 17.911 | O | 1 |
| 3672 | 15.0 | 25.0 | 20.0 | 40.0 | 16.127 | O | 1 |
| 3673 | 10.0 | 30.0 | 20.0 | 40.0 | 14.343 | O | 1 |
| 3674 | 9.0 | 31.0 | 20.0 | 40.0 | 13.934 | O | 1 |
| 3675 | 8.0 | 32.0 | 20.0 | 40.0 | 13.516 | O | 1 |

[Table 53]

| 3676 | 7.0 | 33.0 | 20.0 | 40.0 | 13.098 | O | 1 |
|------|-----|------|------|------|--------|---|---|
| 3677 | 6.0 | 34.0 | 20.0 | 40.0 | 12.680 | O | 1 |
| 3678 | 5.0 | 35.0 | 20.0 | 40.0 | 12.263 | O | 1 |
| 3679 | 4.0 | 36.0 | 20.0 | 40.0 | 11.845 | O | 1 |
| 3680 | 3.0 | 37.0 | 20.0 | 40.0 | 11.427 | O | 1 |
| 3681 | 2.0 | 38.0 | 20.0 | 40.0 | 11.009 | O | 1 |
| 3682 | 1.0 | 39.0 | 20.0 | 40.0 | 10.591 | O | 1 |
| 3683 | 0.0 | 40.0 | 20.0 | 40.0 | 10.173 | O | 1 |
| 3684 | 23.0 | 12.0 | 25.0 | 40.0 | 19.012 | X | 1 |
| 3685 | 22.9 | 12.1 | 25.0 | 40.0 | 18.976 | O | 1 |
| 3686 | 22.0 | 13.0 | 25.0 | 40.0 | 18.655 | O | 1 |
| 3687 | 20.0 | 15.0 | 25.0 | 40.0 | 17.941 | O | 1 |
| 3688 | 15.0 | 20.0 | 25.0 | 40.0 | 16.157 | O | 1 |
| 3689 | 10.0 | 25.0 | 25.0 | 40.0 | 14.373 | O | 1 |
| 3690 | 9.0 | 26.0 | 25.0 | 40.0 | 13.974 | O | 1 |
| 3691 | 8.0 | 27.0 | 25.0 | 40.0 | 13.556 | O | 1 |
| 3692 | 7.0 | 28.0 | 25.0 | 40.0 | 13.139 | O | 1 |
| 3693 | 6.0 | 29.0 | 25.0 | 40.0 | 12.721 | O | 1 |
| 3694 | 5.0 | 30.0 | 25.0 | 40.0 | 12.303 | O | 1 |
| 3695 | 4.0 | 31.0 | 25.0 | 40.0 | 11.885 | O | 1 |
| 3696 | 3.0 | 32.0 | 25.0 | 40.0 | 11.467 | O | 1 |
| 3697 | 2.0 | 33.0 | 25.0 | 40.0 | 11.049 | O | 1 |
| 3698 | 1.0 | 34.0 | 25.0 | 40.0 | 10.631 | O | 1 |
| 3699 | 0.0 | 35.0 | 25.0 | 40.0 | 10.213 | O | 1 |
| 3700 | 23.0 | 7.0 | 30.0 | 40.0 | 19.042 | X | 1 |
| 3701 | 22.9 | 7.1 | 30.0 | 40.0 | 19.006 | X | 1 |
| 3702 | 22.8 | 7.2 | 30.0 | 40.0 | 18.970 | O | 1 |
| 3703 | 22.0 | 8.0 | 30.0 | 40.0 | 18.685 | O | 1 |
| 3704 | 20.0 | 10.0 | 30.0 | 40.0 | 17.971 | O | 1 |
| 3705 | 15.0 | 15.0 | 30.0 | 40.0 | 16.187 | O | 1 |
| 3706 | 10.0 | 20.0 | 30.0 | 40.0 | 14.403 | O | 1 |
| 3707 | 9.0 | 21.0 | 30.0 | 40.0 | 14.014 | O | 1 |
| 3708 | 8.0 | 22.0 | 30.0 | 40.0 | 13.597 | O | 1 |
| 3709 | 7.0 | 23.0 | 30.0 | 40.0 | 13.179 | O | 1 |
| 3710 | 6.0 | 24.0 | 30.0 | 40.0 | 12.761 | O | 1 |
| 3711 | 5.0 | 25.0 | 30.0 | 40.0 | 12.343 | O | 1 |
| 3712 | 4.0 | 26.0 | 30.0 | 40.0 | 11.925 | O | 1 |
| 3713 | 3.0 | 27.0 | 30.0 | 40.0 | 11.507 | O | 1 |
| 3714 | 2.0 | 28.0 | 30.0 | 40.0 | 11.089 | O | 1 |
| 3715 | 1.0 | 29.0 | 30.0 | 40.0 | 10.671 | O | 1 |
| 3716 | 0.0 | 30.0 | 30.0 | 40.0 | 10.253 | O | 1 |
| 3717 | 23.0 | 2.0 | 35.0 | 40.0 | 19.072 | X | 1 |
| 3718 | 22.8 | 2.2 | 35.0 | 40.0 | 19.000 | X | 1 |
| 3719 | 22.7 | 2.3 | 35.0 | 40.0 | 18.965 | O | 1 |
| 3720 | 22.0 | 3.0 | 35.0 | 40.0 | 18.715 | O | 1 |
| 3721 | 20.0 | 5.0 | 35.0 | 40.0 | 18.001 | O | 1 |
| 3722 | 15.0 | 10.0 | 35.0 | 40.0 | 16.217 | O | 1 |
| 3723 | 10.0 | 15.0 | 35.0 | 40.0 | 14.433 | O | 1 |
| 3724 | 9.0 | 16.0 | 35.0 | 40.0 | 14.055 | O | 1 |
| 3725 | 8.0 | 17.0 | 35.0 | 40.0 | 13.637 | O | 1 |

[Table 54]

| 3726 | 7.0 | 18.0 | 35.0 | 40.0 | 13.219 | O | 1 |
|------|-----|------|------|------|--------|---|---|
| 3727 | 6.0 | 19.0 | 35.0 | 40.0 | 12.801 | O | 1 |
| 3728 | 5.0 | 20.0 | 35.0 | 40.0 | 12.383 | O | 1 |
| 3729 | 4.0 | 21.0 | 35.0 | 40.0 | 11.965 | O | 1 |
| 3730 | 3.0 | 22.0 | 35.0 | 40.0 | 11.547 | O | 1 |
| 3731 | 2.0 | 23.0 | 35.0 | 40.0 | 11.129 | O | 1 |
| 3732 | 1.0 | 24.0 | 35.0 | 40.0 | 10.711 | O | 1 |
| 3733 | 0.0 | 25.0 | 35.0 | 40.0 | 10.293 | O | 1 |
| 3734 | 24.0 | 21.0 | 5.0 | 50.0 | 19.249 | X | 1 |
| 3735 | 23.4 | 21.6 | 5.0 | 50.0 | 19.035 | X | 1 |
| 3736 | 23.3 | 21.7 | 5.0 | 50.0 | 18.999 | O | 1 |
| 3737 | 23.0 | 22.0 | 5.0 | 50.0 | 18.892 | O | 1 |
| 3738 | 20.0 | 25.0 | 5.0 | 50.0 | 17.822 | O | 1 |
| 3739 | 15.0 | 30.0 | 5.0 | 50.0 | 16.038 | O | 1 |
| 3740 | 10.0 | 35.0 | 5.0 | 50.0 | 14.253 | O | 1 |
| 3741 | 9.0 | 36.0 | 5.0 | 50.0 | 13.835 | O | 1 |
| 3742 | 8.0 | 37.0 | 5.0 | 50.0 | 13.417 | O | 1 |
| 3743 | 7.0 | 38.0 | 5.0 | 50.0 | 12.999 | O | 1 |
| 3744 | 6.0 | 39.0 | 5.0 | 50.0 | 12.581 | O | 1 |
| 3745 | 5.0 | 40.0 | 5.0 | 50.0 | 12.163 | O | 1 |
| 3746 | 4.0 | 41.0 | 5.0 | 50.0 | 11.745 | O | 1 |
| 3747 | 3.0 | 42.0 | 5.0 | 50.0 | 11.327 | O | 1 |
| 3748 | 2.0 | 43.0 | 5.0 | 50.0 | 10.909 | O | 1 |
| 3749 | 1.0 | 44.0 | 5.0 | 50.0 | 10.491 | O | 1 |
| 3750 | 0.0 | 45.0 | 5.0 | 50.0 | 10.073 | O | 1 |
| 3751 | 24.0 | 16.0 | 10.0 | 50.0 | 19.279 | X | 1 |
| 3752 | 23.3 | 16.7 | 10.0 | 50.0 | 19.029 | X | 1 |
| 3753 | 23.2 | 16.8 | 10.0 | 50.0 | 18.994 | O | 1 |
| 3754 | 23.0 | 17.0 | 10.0 | 50.0 | 18.922 | O | 1 |
| 3755 | 20.0 | 20.0 | 10.0 | 50.0 | 17.852 | O | 1 |
| 3756 | 15.0 | 25.0 | 10.0 | 50.0 | 16.068 | O | 1 |
| 3757 | 10.0 | 30.0 | 10.0 | 50.0 | 14.284 | O | 1 |
| 3758 | 9.0 | 31.0 | 10.0 | 50.0 | 13.875 | O | 1 |
| 3759 | 8.0 | 32.0 | 10.0 | 50.0 | 13.457 | O | 1 |
| 3760 | 7.0 | 33.0 | 10.0 | 50.0 | 13.039 | O | 1 |
| 3761 | 6.0 | 34.0 | 10.0 | 50.0 | 12.621 | O | 1 |
| 3762 | 5.0 | 35.0 | 10.0 | 50.0 | 12.203 | O | 1 |
| 3763 | 4.0 | 36.0 | 10.0 | 50.0 | 11.785 | O | 1 |
| 3764 | 3.0 | 37.0 | 10.0 | 50.0 | 11.367 | O | 1 |
| 3765 | 2.0 | 38.0 | 10.0 | 50.0 | 10.949 | O | 1 |
| 3766 | 1.0 | 39.0 | 10.0 | 50.0 | 10.532 | O | 1 |
| 3767 | 0.0 | 40.0 | 10.0 | 50.0 | 10.114 | O | 1 |
| 3768 | 24.0 | 11.0 | 15.0 | 50.0 | 19.309 | X | 1 |
| 3769 | 23.2 | 11.8 | 15.0 | 50.0 | 19.024 | X | 1 |
| 3770 | 23.1 | 11.9 | 15.0 | 50.0 | 18.988 | O | 1 |
| 3771 | 23.0 | 12.0 | 15.0 | 50.0 | 18.952 | O | 1 |
| 3772 | 20.0 | 15.0 | 15.0 | 50.0 | 17.882 | O | 1 |
| 3773 | 15.0 | 20.0 | 15.0 | 50.0 | 16.098 | O | 1 |
| 3774 | 10.0 | 25.0 | 15.0 | 50.0 | 14.314 | O | 1 |
| 3775 | 9.0 | 26.0 | 15.0 | 50.0 | 13.915 | O | 1 |

[Table 55]

| 3776 | 8.0 | 27.0 | 15.0 | 50.0 | 13.497 | O | 1 |
|---|---|---|---|---|---|---|---|
| 3777 | 7.0 | 28.0 | 15.0 | 50.0 | 13.079 | O | 1 |
| 3778 | 6.0 | 29.0 | 15.0 | 50.0 | 12.661 | O | 1 |
| 3779 | 5.0 | 30.0 | 15.0 | 50.0 | 12.243 | O | 1 |
| 3780 | 4.0 | 31.0 | 15.0 | 50.0 | 11.825 | O | 1 |
| 3781 | 3.0 | 32.0 | 15.0 | 50.0 | 11.407 | O | 1 |
| 3782 | 2.0 | 33.0 | 15.0 | 50.0 | 10.990 | O | 1 |
| 3783 | 1.0 | 34.0 | 15.0 | 50.0 | 10.572 | O | 1 |
| 3784 | 0.0 | 35.0 | 15.0 | 50.0 | 10.154 | O | 1 |
| 3785 | 24.0 | 6.0 | 20.0 | 50.0 | 19.339 | X | 1 |
| 3786 | 23.1 | 6.9 | 20.0 | 50.0 | 19.018 | X | 1 |
| 3787 | 23.0 | 7.0 | 20.0 | 50.0 | 18.982 | O | 1 |
| 3788 | 20.0 | 10.0 | 20.0 | 50.0 | 17.912 | O | 1 |
| 3789 | 15.0 | 15.0 | 20.0 | 50.0 | 16.128 | O | 1 |
| 3790 | 10.0 | 20.0 | 20.0 | 50.0 | 14.344 | O | 1 |
| 3791 | 9.0 | 21.0 | 20.0 | 50.0 | 13.955 | O | 1 |
| 3792 | 8.0 | 22.0 | 20.0 | 50.0 | 13.537 | O | 1 |
| 3793 | 7.0 | 23.0 | 20.0 | 50.0 | 13.119 | O | 1 |
| 3794 | 6.0 | 24.0 | 20.0 | 50.0 | 12.701 | O | 1 |
| 3795 | 5.0 | 25.0 | 20.0 | 50.0 | 12.283 | O | 1 |
| 3796 | 4.0 | 26.0 | 20.0 | 50.0 | 11.866 | O | 1 |
| 3797 | 3.0 | 27.0 | 20.0 | 50.0 | 11.448 | O | 1 |
| 3798 | 2.0 | 28.0 | 20.0 | 50.0 | 11.030 | O | 1 |
| 3799 | 1.0 | 29.0 | 20.0 | 50.0 | 10.612 | O | 1 |
| 3800 | 0.0 | 30.0 | 20.0 | 50.0 | 10.194 | O | 1 |
| 3801 | 23.0 | 2.0 | 25.0 | 50.0 | 19.012 | X | 1 |
| 3802 | 22.9 | 2.1 | 25.0 | 50.0 | 18.977 | O | 1 |
| 3803 | 22.0 | 3.0 | 25.0 | 50.0 | 18.655 | O | 1 |
| 3804 | 20.0 | 5.0 | 25.0 | 50.0 | 17.942 | O | 1 |
| 3805 | 15.0 | 10.0 | 25.0 | 50.0 | 16.158 | O | 1 |
| 3806 | 10.0 | 15.0 | 25.0 | 50.0 | 14.374 | O | 1 |
| 3807 | 9.0 | 16.0 | 25.0 | 50.0 | 13.995 | O | 1 |
| 3808 | 8.0 | 17.0 | 25.0 | 50.0 | 13.577 | O | 1 |
| 3809 | 7.0 | 18.0 | 25.0 | 50.0 | 13.159 | O | 1 |
| 3810 | 6.0 | 19.0 | 25.0 | 50.0 | 12.742 | O | 1 |
| 3811 | 5.0 | 20.0 | 25.0 | 50.0 | 12.324 | O | 1 |
| 3812 | 4.0 | 21.0 | 25.0 | 50.0 | 11.906 | O | 1 |
| 3813 | 3.0 | 22.0 | 25.0 | 50.0 | 11.488 | O | 1 |
| 3814 | 2.0 | 23.0 | 25.0 | 50.0 | 11.070 | O | 1 |
| 3815 | 1.0 | 24.0 | 25.0 | 50.0 | 10.652 | O | 1 |
| 3816 | 0.0 | 25.0 | 25.0 | 50.0 | 10.234 | O | 1 |
| 3817 | 24.0 | 11.0 | 5.0 | 60.0 | 19.250 | X | 1 |
| 3818 | 23.3 | 11.7 | 5.0 | 60.0 | 19.000 | **X** | 1 |
| 3819 | 23.2 | 11.8 | 5.0 | 60.0 | 18.964 | O | 1 |
| 3820 | 23.0 | 12.0 | 5.0 | 60.0 | 18.893 | O | 1 |
| 3821 | 20.0 | 15.0 | 5.0 | 60.0 | 17.822 | O | 1 |
| 3822 | 15.0 | 20.0 | 5.0 | 60.0 | 16.038 | O | 1 |
| 3823 | 10.0 | 25.0 | 5.0 | 60.0 | 14.254 | O | 1 |
| 3824 | 9.0 | 26.0 | 5.0 | 60.0 | 13.856 | O | 1 |
| 3825 | 8.0 | 27.0 | 5.0 | 60.0 | 13.438 | O | 1 |

[Table 56]

| 3826 | 7.0 | 28.0 | 5.0 | 60.0 | 13.020 | O | 1 |
|------|------|------|------|------|--------|---|---|
| 3827 | 6.0 | 29.0 | 5.0 | 60.0 | 12.602 | O | 1 |
| 3828 | 5.0 | 30.0 | 5.0 | 60.0 | 12.184 | O | 1 |
| 3829 | 4.0 | 31.0 | 5.0 | 60.0 | 11.766 | O | 1 |
| 3830 | 3.0 | 32.0 | 5.0 | 60.0 | 11.348 | O | 1 |
| 3831 | 2.0 | 33.0 | 5.0 | 60.0 | 10.930 | O | 1 |
| 3832 | 1.0 | 34.0 | 5.0 | 60.0 | 10.512 | O | 1 |
| 3833 | 0.0 | 35.0 | 5.0 | 60.0 | 10.094 | O | 1 |
| 3834 | 24.0 | 6.0 | 10.0 | 60.0 | 19.280 | X | 1 |
| 3835 | 23.3 | 6.7 | 10.0 | 60.0 | 19.030 | X | 1 |
| 3836 | 23.2 | 6.8 | 10.0 | 60.0 | 18.994 | O | 1 |
| 3837 | 23.0 | 7.0 | 10.0 | 60.0 | 18.923 | O | 1 |
| 3838 | 20.0 | 10.0 | 10.0 | 60.0 | 17.852 | O | 1 |
| 3839 | 15.0 | 15.0 | 10.0 | 60.0 | 16.068 | O | 1 |
| 3840 | 10.0 | 20.0 | 10.0 | 60.0 | 14.284 | O | 1 |
| 3841 | 9.0 | 21.0 | 10.0 | 60.0 | 13.896 | O | 1 |
| 3842 | 8.0 | 22.0 | 10.0 | 60.0 | 13.478 | O | 1 |
| 3843 | 7.0 | 23.0 | 10.0 | 60.0 | 13.060 | O | 1 |
| 3844 | 6.0 | 24.0 | 10.0 | 60.0 | 12.642 | O | 1 |
| 3845 | 5.0 | 25.0 | 10.0 | 60.0 | 12.224 | O | 1 |
| 3846 | 4.0 | 26.0 | 10.0 | 60.0 | 11.806 | O | 1 |
| 3847 | 3.0 | 27.0 | 10.0 | 60.0 | 11.388 | O | 1 |
| 3848 | 2.0 | 28.0 | 10.0 | 60.0 | 10.970 | O | 1 |
| 3849 | 1.0 | 29.0 | 10.0 | 60.0 | 10.552 | O | 1 |
| 3850 | 0.0 | 30.0 | 10.0 | 60.0 | 10.134 | O | 1 |
| 3851 | 24.0 | 1.0 | 15.0 | 60.0 | 19.310 | X | 1 |
| 3852 | 23.2 | 1.8 | 15.0 | 60.0 | 19.024 | X | 1 |
| 3853 | 23.1 | 1.9 | 15.0 | 60.0 | 18.989 | O | 1 |
| 3854 | 23.0 | 2.0 | 15.0 | 60.0 | 18.953 | O | 1 |
| 3855 | 20.0 | 5.0 | 15.0 | 60.0 | 17.882 | O | 1 |
| 3856 | 15.0 | 10.0 | 15.0 | 60.0 | 16.098 | O | 1 |
| 3857 | 10.0 | 15.0 | 15.0 | 60.0 | 14.314 | O | 1 |
| 3858 | 9.0 | 16.0 | 15.0 | 60.0 | 13.936 | O | 1 |
| 3859 | 8.0 | 17.0 | 15.0 | 60.0 | 13.518 | O | 1 |
| 3860 | 7.0 | 18.0 | 15.0 | 60.0 | 13.100 | O | 1 |
| 3861 | 6.0 | 19.0 | 15.0 | 60.0 | 12.682 | O | 1 |
| 3862 | 5.0 | 20.0 | 15.0 | 60.0 | 12.264 | O | 1 |
| 3863 | 4.0 | 21.0 | 15.0 | 60.0 | 11.846 | O | 1 |
| 3864 | 3.0 | 22.0 | 15.0 | 60.0 | 11.428 | O | 1 |
| 3865 | 2.0 | 23.0 | 15.0 | 60.0 | 11.010 | O | 1 |
| 3866 | 1.0 | 24.0 | 15.0 | 60.0 | 10.593 | O | 1 |
| 3867 | 0.0 | 25.0 | 15.0 | 60.0 | 10.175 | O | 1 |
| 3868 | 24.0 | 1.0 | 5.0 | 70.0 | 19.250 | X | 1 |
| 3869 | 23.3 | 1.7 | 5.0 | 70.0 | 19.001 | X | 1 |
| 3870 | 23.2 | 1.8 | 5.0 | 70.0 | 18.965 | O | 1 |
| 3871 | 23.0 | 2.0 | 5.0 | 70.0 | 18.893 | O | 1 |
| 3872 | 20.0 | 5.0 | 5.0 | 70.0 | 17.823 | O | 1 |
| 3873 | 15.0 | 10.0 | 5.0 | 70.0 | 16.039 | O | 1 |
| 3874 | 10.0 | 15.0 | 5.0 | 70.0 | 14.255 | O | 1 |
| 3875 | 9.0 | 16.0 | 5.0 | 70.0 | 13.877 | O | 1 |

[Table 57]

| 3876 | 8.0 | 17.0 | 5.0 | 70.0 | 13.459 | O | 1 |
|---|---|---|---|---|---|---|---|
| 3877 | 7.0 | 18.0 | 5.0 | 70.0 | 13.041 | O | 1 |
| 3878 | 6.0 | 19.0 | 5.0 | 70.0 | 12.623 | O | 1 |
| 3879 | 5.0 | 20.0 | 5.0 | 70.0 | 12.205 | O | 1 |
| 3880 | 4.0 | 21.0 | 5.0 | 70.0 | 11.787 | O | 1 |
| 3881 | 3.0 | 22.0 | 5.0 | 70.0 | 11.369 | O | 1 |
| 3882 | 2.0 | 23.0 | 5.0 | 70.0 | 10.951 | O | 1 |
| 3883 | 1.0 | 24.0 | 5.0 | 70.0 | 10.533 | O | 1 |
| 3884 | 0.0 | 25.0 | 5.0 | 70.0 | 10.115 | O | 1 |

Tables 58 to 82 show the composition, combustion heat amount, and GWP of the working medium of a four-component system of propane, HFO-1123, HFO-1234yf, and HFC-32.

[Table 58]

| Case | propane | HFO-1123 | HFO-1234yf | HFC-32 | Heat of Combustion | Evaluation | GWP |
|---|---|---|---|---|---|---|---|
| 3885 | 24.0 | 69.0 | 5.0 | 2.0 | 19.224 | X | 15 |
| 3886 | 23.4 | 69.6 | 5.0 | 2.0 | 19.010 | X | 15 |
| 3887 | 23.3 | 69.7 | 5.0 | 2.0 | 18.974 | O | 15 |
| 3888 | 23.0 | 70.0 | 5.0 | 2.0 | 18.867 | O | 15 |
| 3889 | 20.0 | 73.0 | 5.0 | 2.0 | 17.797 | O | 15 |
| 3890 | 10.0 | 83.0 | 5.0 | 2.0 | 14.140 | O | 15 |
| 3891 | 9.0 | 84.0 | 5.0 | 2.0 | 13.723 | O | 15 |
| 3892 | 8.0 | 85.0 | 5.0 | 2.0 | 13.305 | O | 15 |
| 3893 | 7.0 | 86.0 | 5.0 | 2.0 | 12.887 | O | 15 |
| 3894 | 6.0 | 87.0 | 5.0 | 2.0 | 12.469 | O | 15 |
| 3895 | 5.0 | 88.0 | 5.0 | 2.0 | 12.051 | O | 15 |
| 3896 | 4.0 | 89.0 | 5.0 | 2.0 | 11.633 | O | 15 |
| 3897 | 3.0 | 90.0 | 5.0 | 2.0 | 11.215 | O | 15 |
| 3898 | 2.0 | 91.0 | 5.0 | 2.0 | 10.797 | O | 15 |
| 3899 | 1.0 | 92.0 | 5.0 | 2.0 | 10.379 | O | 15 |
| 3900 | 0.0 | 93.0 | 5.0 | 2.0 | 9.961 | O | 15 |
| 3901 | 24.0 | 64.0 | 10.0 | 2.0 | 19.254 | X | 15 |
| 3902 | 23.3 | 64.7 | 10.0 | 2.0 | 19.004 | X | 15 |
| 3903 | 23.2 | 64.8 | 10.0 | 2.0 | 18.969 | O | 15 |
| 3904 | 23.0 | 65.0 | 10.0 | 2.0 | 18.897 | O | 15 |
| 3905 | 20.0 | 68.0 | 10.0 | 2.0 | 17.827 | O | 15 |
| 3906 | 10.0 | 78.0 | 10.0 | 2.0 | 14.181 | O | 15 |
| 3907 | 9.0 | 79.0 | 10.0 | 2.0 | 13.763 | O | 15 |
| 3908 | 8.0 | 80.0 | 10.0 | 2.0 | 13.345 | O | 15 |
| 3909 | 7.0 | 81.0 | 10.0 | 2.0 | 12.927 | O | 15 |
| 3910 | 6.0 | 82.0 | 10.0 | 2.0 | 12.509 | O | 15 |
| 3911 | 5.0 | 83.0 | 10.0 | 2.0 | 12.091 | O | 15 |
| 3912 | 4.0 | 84.0 | 10.0 | 2.0 | 11.673 | O | 15 |
| 3913 | 3.0 | 85.0 | 10.0 | 2.0 | 11.255 | O | 15 |
| 3914 | 2.0 | 86.0 | 10.0 | 2.0 | 10.837 | O | 15 |
| 3915 | 1.0 | 87.0 | 10.0 | 2.0 | 10.419 | O | 15 |
| 3916 | 0.0 | 88.0 | 10.0 | 2.0 | 10.001 | O | 15 |
| 3917 | 24.0 | 59.0 | 15.0 | 2.0 | 19.284 | X | 15 |
| 3918 | 23.3 | 59.7 | 15.0 | 2.0 | 19.034 | X | 15 |
| 3919 | 23.2 | 59.8 | 15.0 | 2.0 | 18.999 | O | 15 |
| 3920 | 23.0 | 60.0 | 15.0 | 2.0 | 18.927 | O | 15 |
| 3921 | 20.0 | 63.0 | 15.0 | 2.0 | 17.857 | O | 15 |
| 3922 | 10.0 | 73.0 | 15.0 | 2.0 | 14.221 | O | 15 |
| 3923 | 9.0 | 74.0 | 15.0 | 2.0 | 13.803 | O | 15 |
| 3924 | 8.0 | 75.0 | 15.0 | 2.0 | 13.385 | O | 15 |
| 3925 | 7.0 | 76.0 | 15.0 | 2.0 | 12.967 | O | 15 |
| 3926 | 6.0 | 77.0 | 15.0 | 2.0 | 12.549 | O | 15 |
| 3927 | 5.0 | 78.0 | 15.0 | 2.0 | 12.131 | O | 15 |
| 3928 | 4.0 | 79.0 | 15.0 | 2.0 | 11.713 | O | 15 |
| 3929 | 3.0 | 80.0 | 15.0 | 2.0 | 11.295 | O | 15 |
| 3930 | 2.0 | 81.0 | 15.0 | 2.0 | 10.877 | O | 15 |
| 3931 | 1.0 | 82.0 | 15.0 | 2.0 | 10.460 | O | 15 |
| 3932 | 0.0 | 83.0 | 15.0 | 2.0 | 10.042 | O | 15 |
| 3933 | 24.0 | 54.0 | 20.0 | 2.0 | 19.314 | X | 15 |
| 3934 | 23.2 | 54.8 | 20.0 | 2.0 | 19.029 | X | 15 |

[Table 59]

| 3935 | 23.1 | 54.9 | 20.0 | 2.0 | 18.993 | O | 15 |
|---|---|---|---|---|---|---|---|
| 3936 | 23.0 | 55.0 | 20.0 | 2.0 | 18.957 | O | 15 |
| 3937 | 20.0 | 58.0 | 20.0 | 2.0 | 17.887 | O | 15 |
| 3938 | 10.0 | 68.0 | 20.0 | 2.0 | 14.261 | O | 15 |
| 3939 | 9.0 | 69.0 | 20.0 | 2.0 | 13.843 | O | 15 |
| 3940 | 8.0 | 70.0 | 20.0 | 2.0 | 13.425 | O | 15 |
| 3941 | 7.0 | 71.0 | 20.0 | 2.0 | 13.007 | O | 15 |
| 3942 | 6.0 | 72.0 | 20.0 | 2.0 | 12.589 | O | 15 |
| 3943 | 5.0 | 73.0 | 20.0 | 2.0 | 12.171 | O | 15 |
| 3944 | 4.0 | 74.0 | 20.0 | 2.0 | 11.753 | O | 15 |
| 3945 | 3.0 | 75.0 | 20.0 | 2.0 | 11.335 | O | 15 |
| 3946 | 2.0 | 76.0 | 20.0 | 2.0 | 10.918 | O | 15 |
| 3947 | 1.0 | 77.0 | 20.0 | 2.0 | 10.500 | O | 15 |
| 3948 | 0.0 | 78.0 | 20.0 | 2.0 | 10.082 | O | 15 |
| 3949 | 24.0 | 49.0 | 25.0 | 2.0 | 19.344 | X | 15 |
| 3950 | 23.2 | 49.8 | 25.0 | 2.0 | 19.059 | X | 15 |
| 3951 | 23.1 | 49.9 | 25.0 | 2.0 | 19.023 | X | 15 |
| 3952 | 23.0 | 50.0 | 25.0 | 2.0 | 18.987 | O | 15 |
| 3953 | 20.0 | 53.0 | 25.0 | 2.0 | 17.917 | O | 15 |
| 3954 | 10.0 | 63.0 | 25.0 | 2.0 | 14.301 | O | 15 |
| 3955 | 9.0 | 64.0 | 25.0 | 2.0 | 13.883 | O | 15 |
| 3956 | 8.0 | 65.0 | 25.0 | 2.0 | 13.465 | O | 15 |
| 3957 | 7.0 | 66.0 | 25.0 | 2.0 | 13.047 | O | 15 |
| 3958 | 6.0 | 67.0 | 25.0 | 2.0 | 12.629 | O | 15 |
| 3959 | 5.0 | 68.0 | 25.0 | 2.0 | 12.211 | O | 15 |
| 3960 | 4.0 | 69.0 | 25.0 | 2.0 | 11.794 | O | 15 |
| 3961 | 3.0 | 70.0 | 25.0 | 2.0 | 11.376 | O | 15 |
| 3962 | 2.0 | 71.0 | 25.0 | 2.0 | 10.958 | O | 15 |
| 3963 | 1.0 | 72.0 | 25.0 | 2.0 | 10.540 | O | 15 |
| 3964 | 0.0 | 73.0 | 25.0 | 2.0 | 10.122 | O | 15 |
| 3965 | 23.0 | 45.0 | 30.0 | 2.0 | 19.017 | X | 15 |
| 3966 | 22.9 | 45.1 | 30.0 | 2.0 | 18.982 | O | 15 |
| 3967 | 22.0 | 46.0 | 30.0 | 2.0 | 18.660 | O | 15 |
| 3968 | 20.0 | 48.0 | 30.0 | 2.0 | 17.947 | O | 15 |
| 3969 | 10.0 | 58.0 | 30.0 | 2.0 | 14.341 | O | 15 |
| 3970 | 9.0 | 59.0 | 30.0 | 2.0 | 13.923 | O | 15 |
| 3971 | 8.0 | 60.0 | 30.0 | 2.0 | 13.505 | O | 15 |
| 3972 | 7.0 | 61.0 | 30.0 | 2.0 | 13.087 | O | 15 |
| 3973 | 6.0 | 62.0 | 30.0 | 2.0 | 12.669 | O | 15 |
| 3974 | 5.0 | 63.0 | 30.0 | 2.0 | 12.252 | O | 15 |
| 3975 | 4.0 | 64.0 | 30.0 | 2.0 | 11.834 | O | 15 |
| 3976 | 3.0 | 65.0 | 30.0 | 2.0 | 11.416 | O | 15 |
| 3977 | 2.0 | 66.0 | 30.0 | 2.0 | 10.998 | O | 15 |
| 3978 | 1.0 | 67.0 | 30.0 | 2.0 | 10.580 | O | 15 |
| 3979 | 0.0 | 68.0 | 30.0 | 2.0 | 10.162 | O | 15 |
| 3980 | 23.0 | 40.0 | 35.0 | 2.0 | 19.047 | X | 15 |
| 3981 | 22.9 | 40.1 | 35.0 | 2.0 | 19.011 | X | 15 |
| 3982 | 22.8 | 40.2 | 35.0 | 2.0 | 18.976 | O | 15 |
| 3983 | 22.0 | 41.0 | 35.0 | 2.0 | 18.690 | O | 15 |
| 3984 | 20.0 | 43.0 | 35.0 | 2.0 | 17.977 | O | 15 |

[Table 60]

| | | | | | | | |
|---|---|---|---|---|---|---|---|
| 3985 | 10.0 | 53.0 | 35.0 | 2.0 | 14.381 | O | 15 |
| 3986 | 9.0 | 54.0 | 35.0 | 2.0 | 13.963 | O | 15 |
| 3987 | 8.0 | 55.0 | 35.0 | 2.0 | 13.545 | O | 15 |
| 3988 | 7.0 | 56.0 | 35.0 | 2.0 | 13.128 | O | 15 |
| 3989 | 6.0 | 57.0 | 35.0 | 2.0 | 12.710 | O | 15 |
| 3990 | 5.0 | 58.0 | 35.0 | 2.0 | 12.292 | O | 15 |
| 3991 | 4.0 | 59.0 | 35.0 | 2.0 | 11.874 | O | 15 |
| 3992 | 3.0 | 60.0 | 35.0 | 2.0 | 11.456 | O | 15 |
| 3993 | 2.0 | 61.0 | 35.0 | 2.0 | 11.038 | O | 15 |
| 3994 | 1.0 | 62.0 | 35.0 | 2.0 | 10.620 | O | 15 |
| 3995 | 0.0 | 63.0 | 35.0 | 2.0 | 10.202 | O | 15 |
| 3996 | 23.0 | 35.0 | 40.0 | 2.0 | 19.077 | X | 15 |
| 3997 | 22.8 | 35.2 | 40.0 | 2.0 | 19.006 | X | 15 |
| 3998 | 22.7 | 35.3 | 40.0 | 2.0 | 18.970 | O | 15 |
| 3999 | 22.0 | 36.0 | 40.0 | 2.0 | 18.720 | O | 15 |
| 4000 | 20.0 | 38.0 | 40.0 | 2.0 | 18.007 | O | 15 |
| 4001 | 10.0 | 48.0 | 40.0 | 2.0 | 14.421 | O | 15 |
| 4002 | 9.0 | 49.0 | 40.0 | 2.0 | 14.004 | O | 15 |
| 4003 | 8.0 | 50.0 | 40.0 | 2.0 | 13.586 | O | 15 |
| 4004 | 7.0 | 51.0 | 40.0 | 2.0 | 13.168 | O | 15 |
| 4005 | 6.0 | 52.0 | 40.0 | 2.0 | 12.750 | O | 15 |
| 4006 | 5.0 | 53.0 | 40.0 | 2.0 | 12.332 | O | 15 |
| 4007 | 4.0 | 54.0 | 40.0 | 2.0 | 11.914 | O | 15 |
| 4008 | 3.0 | 55.0 | 40.0 | 2.0 | 11.496 | O | 15 |
| 4009 | 2.0 | 56.0 | 40.0 | 2.0 | 11.078 | O | 15 |
| 4010 | 1.0 | 57.0 | 40.0 | 2.0 | 10.660 | O | 15 |
| 4011 | 0.0 | 58.0 | 40.0 | 2.0 | 10.242 | O | 15 |
| 4012 | 23.0 | 30.0 | 45.0 | 2.0 | 19.107 | X | 15 |
| 4013 | 22.7 | 30.3 | 45.0 | 2.0 | 19.000 | X | 15 |
| 4014 | 22.6 | 30.4 | 45.0 | 2.0 | 18.964 | O | 15 |
| 4015 | 22.0 | 31.0 | 45.0 | 2.0 | 18.750 | O | 15 |
| 4016 | 20.0 | 33.0 | 45.0 | 2.0 | 18.037 | O | 15 |
| 4017 | 10.0 | 43.0 | 45.0 | 2.0 | 14.462 | O | 15 |
| 4018 | 9.0 | 44.0 | 45.0 | 2.0 | 14.044 | O | 15 |
| 4019 | 8.0 | 45.0 | 45.0 | 2.0 | 13.626 | O | 15 |
| 4020 | 7.0 | 46.0 | 45.0 | 2.0 | 13.208 | O | 15 |
| 4021 | 6.0 | 47.0 | 45.0 | 2.0 | 12.790 | O | 15 |
| 4022 | 5.0 | 48.0 | 45.0 | 2.0 | 12.372 | O | 15 |
| 4023 | 4.0 | 49.0 | 45.0 | 2.0 | 11.954 | O | 15 |
| 4024 | 3.0 | 50.0 | 45.0 | 2.0 | 11.536 | O | 15 |
| 4025 | 2.0 | 51.0 | 45.0 | 2.0 | 11.118 | O | 15 |
| 4026 | 1.0 | 52.0 | 45.0 | 2.0 | 10.700 | O | 15 |
| 4027 | 0.0 | 53.0 | 45.0 | 2.0 | 10.282 | O | 15 |
| 4028 | 23.0 | 25.0 | 50.0 | 2.0 | 19.137 | X | 15 |
| 4029 | 22.7 | 25.3 | 50.0 | 2.0 | 19.030 | X | 15 |
| 4030 | 22.6 | 25.4 | 50.0 | 2.0 | 18.994 | O | 15 |
| 4031 | 22.0 | 26.0 | 50.0 | 2.0 | 18.780 | O | 15 |
| 4032 | 20.0 | 28.0 | 50.0 | 2.0 | 18.067 | O | 15 |
| 4033 | 10.0 | 38.0 | 50.0 | 2.0 | 14.499 | O | 15 |
| 4034 | 9.0 | 39.0 | 50.0 | 2.0 | 14.084 | O | 15 |

[Table 61]

| 4035 | 8.0 | 40.0 | 50.0 | 2.0 | 13.666 | O | 15 |
|------|-----|------|------|-----|--------|---|----|
| 4036 | 7.0 | 41.0 | 50.0 | 2.0 | 13.248 | O | 15 |
| 4037 | 6.0 | 42.0 | 50.0 | 2.0 | 12.830 | O | 15 |
| 4038 | 5.0 | 43.0 | 50.0 | 2.0 | 12.412 | O | 15 |
| 4039 | 4.0 | 44.0 | 50.0 | 2.0 | 11.994 | O | 15 |
| 4040 | 3.0 | 45.0 | 50.0 | 2.0 | 11.576 | O | 15 |
| 4041 | 2.0 | 46.0 | 50.0 | 2.0 | 11.158 | O | 15 |
| 4042 | 1.0 | 47.0 | 50.0 | 2.0 | 10.740 | O | 15 |
| 4043 | 0.0 | 48.0 | 50.0 | 2.0 | 10.323 | O | 15 |
| 4044 | 23.0 | 20.0 | 55.0 | 2.0 | 19.167 | X | 15 |
| 4045 | 22.6 | 20.4 | 55.0 | 2.0 | 19.024 | X | 15 |
| 4046 | 22.5 | 20.5 | 55.0 | 2.0 | 18.989 | O | 15 |
| 4047 | 22.0 | 21.0 | 55.0 | 2.0 | 18.810 | O | 15 |
| 4048 | 20.0 | 23.0 | 55.0 | 2.0 | 18.097 | O | 15 |
| 4049 | 10.0 | 33.0 | 55.0 | 2.0 | 14.528 | O | 15 |
| 4050 | 9.0 | 34.0 | 55.0 | 2.0 | 14.124 | O | 15 |
| 4051 | 8.0 | 35.0 | 55.0 | 2.0 | 13.706 | O | 15 |
| 4052 | 7.0 | 36.0 | 55.0 | 2.0 | 13.288 | O | 15 |
| 4053 | 6.0 | 37.0 | 55.0 | 2.0 | 12.870 | O | 15 |
| 4054 | 5.0 | 38.0 | 55.0 | 2.0 | 12.452 | O | 15 |
| 4055 | 4.0 | 39.0 | 55.0 | 2.0 | 12.034 | O | 15 |
| 4056 | 3.0 | 40.0 | 55.0 | 2.0 | 11.616 | O | 15 |
| 4057 | 2.0 | 41.0 | 55.0 | 2.0 | 11.198 | O | 15 |
| 4058 | 1.0 | 42.0 | 55.0 | 2.0 | 10.781 | O | 15 |
| 4059 | 0.0 | 43.0 | 55.0 | 2.0 | 10.363 | O | 15 |
| 4060 | 23.0 | 15.0 | 60.0 | 2.0 | 19.197 | X | 15 |
| 4061 | 22.5 | 15.5 | 60.0 | 2.0 | 19.019 | X | 15 |
| 4062 | 22.4 | 15.6 | 60.0 | 2.0 | 18.983 | O | 15 |
| 4063 | 22.0 | 16.0 | 60.0 | 2.0 | 18.840 | O | 15 |
| 4064 | 20.0 | 18.0 | 60.0 | 2.0 | 18.127 | O | 15 |
| 4065 | 10.0 | 28.0 | 60.0 | 2.0 | 14.558 | O | 15 |
| 4066 | 9.0 | 29.0 | 60.0 | 2.0 | 14.164 | O | 15 |
| 4067 | 8.0 | 30.0 | 60.0 | 2.0 | 13.746 | O | 15 |
| 4068 | 7.0 | 31.0 | 60.0 | 2.0 | 13.328 | O | 15 |
| 4069 | 6.0 | 32.0 | 60.0 | 2.0 | 12.910 | O | 15 |
| 4070 | 5.0 | 33.0 | 60.0 | 2.0 | 12.492 | O | 15 |
| 4071 | 4.0 | 34.0 | 60.0 | 2.0 | 12.074 | O | 15 |
| 4072 | 3.0 | 35.0 | 60.0 | 2.0 | 11.657 | O | 15 |
| 4073 | 2.0 | 36.0 | 60.0 | 2.0 | 11.239 | O | 15 |
| 4074 | 1.0 | 37.0 | 60.0 | 2.0 | 10.821 | O | 15 |
| 4075 | 0.0 | 38.0 | 60.0 | 2.0 | 10.403 | O | 15 |
| 4076 | 23.0 | 10.0 | 65.0 | 2.0 | 19.227 | X | 15 |
| 4077 | 22.4 | 10.6 | 65.0 | 2.0 | 19.013 | X | 15 |
| 4078 | 22.3 | 10.7 | 65.0 | 2.0 | 18.977 | O | 15 |
| 4079 | 22.0 | 11.0 | 65.0 | 2.0 | 18.870 | O | 15 |
| 4080 | 20.0 | 13.0 | 65.0 | 2.0 | 18.157 | O | 15 |
| 4081 | 10.0 | 23.0 | 65.0 | 2.0 | 14.588 | O | 15 |
| 4082 | 9.0 | 24.0 | 65.0 | 2.0 | 14.204 | O | 15 |
| 4083 | 8.0 | 25.0 | 65.0 | 2.0 | 13.786 | O | 15 |
| 4084 | 7.0 | 26.0 | 65.0 | 2.0 | 13.368 | O | 15 |

[Table 62]

| 4085 | 6.0 | 27.0 | 65.0 | 2.0 | 12.950 | O | 15 |
|------|-----|------|------|-----|--------|---|----|
| 4086 | 5.0 | 28.0 | 65.0 | 2.0 | 12.533 | O | 15 |
| 4087 | 4.0 | 29.0 | 65.0 | 2.0 | 12.115 | O | 15 |
| 4088 | 3.0 | 30.0 | 65.0 | 2.0 | 11.697 | O | 15 |
| 4089 | 2.0 | 31.0 | 65.0 | 2.0 | 11.279 | O | 15 |
| 4090 | 1.0 | 32.0 | 65.0 | 2.0 | 10.861 | O | 15 |
| 4091 | 0.0 | 33.0 | 65.0 | 2.0 | 10.443 | O | 15 |
| 4092 | 23.0 | 5.0 | 70.0 | 2.0 | 19.257 | X | 15 |
| 4093 | 22.3 | 5.7 | 70.0 | 2.0 | 19.007 | X | 15 |
| 4094 | 22.2 | 5.8 | 70.0 | 2.0 | 18.972 | O | 15 |
| 4095 | 22.0 | 6.0 | 70.0 | 2.0 | 18.900 | O | 15 |
| 4096 | 20.0 | 8.0 | 70.0 | 2.0 | 18.187 | O | 15 |
| 4097 | 10.0 | 18.0 | 70.0 | 2.0 | 14.618 | O | 15 |
| 4098 | 9.0 | 19.0 | 70.0 | 2.0 | 14.244 | O | 15 |
| 4099 | 8.0 | 20.0 | 70.0 | 2.0 | 13.826 | O | 15 |
| 4100 | 7.0 | 21.0 | 70.0 | 2.0 | 13.408 | O | 15 |
| 4101 | 6.0 | 22.0 | 70.0 | 2.0 | 12.991 | O | 15 |
| 4102 | 5.0 | 23.0 | 70.0 | 2.0 | 12.573 | O | 15 |
| 4103 | 4.0 | 24.0 | 70.0 | 2.0 | 12.155 | O | 15 |
| 4104 | 3.0 | 25.0 | 70.0 | 2.0 | 11.737 | O | 15 |
| 4105 | 2.0 | 26.0 | 70.0 | 2.0 | 11.319 | O | 15 |
| 4106 | 1.0 | 27.0 | 70.0 | 2.0 | 10.901 | O | 15 |
| 4107 | 0.0 | 28.0 | 70.0 | 2.0 | 10.483 | O | 15 |
| 4108 | 23.0 | 0.0 | 75.0 | 2.0 | 19.287 | X | 15 |
| 4109 | 22.2 | 0.8 | 75.0 | 2.0 | 19.001 | X | 15 |
| 4110 | 22.1 | 0.9 | 75.0 | 2.0 | 18.966 | O | 15 |
| 4111 | 22.0 | 1.0 | 75.0 | 2.0 | 18.930 | O | 15 |
| 4112 | 20.0 | 3.0 | 75.0 | 2.0 | 18.217 | O | 15 |
| 4113 | 10.0 | 13.0 | 75.0 | 2.0 | 14.648 | O | 15 |
| 4114 | 9.0 | 14.0 | 75.0 | 2.0 | 14.284 | O | 15 |
| 4115 | 8.0 | 15.0 | 75.0 | 2.0 | 13.867 | O | 15 |
| 4116 | 7.0 | 16.0 | 75.0 | 2.0 | 13.449 | O | 15 |
| 4117 | 6.0 | 17.0 | 75.0 | 2.0 | 13.031 | O | 15 |
| 4118 | 5.0 | 18.0 | 75.0 | 2.0 | 12.613 | O | 15 |
| 4119 | 4.0 | 19.0 | 75.0 | 2.0 | 12.195 | O | 15 |
| 4120 | 3.0 | 20.0 | 75.0 | 2.0 | 11.777 | O | 15 |
| 4121 | 2.0 | 21.0 | 75.0 | 2.0 | 11.359 | O | 15 |
| 4122 | 1.0 | 22.0 | 75.0 | 2.0 | 10.941 | O | 15 |
| 4123 | 0.0 | 23.0 | 75.0 | 2.0 | 10.523 | O | 15 |
| 4124 | 24.0 | 66.0 | 5.0 | 5.0 | 19.191 | X | 35 |
| 4125 | 23.5 | 66.5 | 5.0 | 5.0 | 19.013 | X | 35 |
| 4126 | 23.4 | 66.6 | 5.0 | 5.0 | 18.977 | O | 35 |
| 4127 | 23.0 | 67.0 | 5.0 | 5.0 | 18.834 | O | 35 |
| 4128 | 20.0 | 70.0 | 5.0 | 5.0 | 17.764 | O | 35 |
| 4129 | 15.0 | 75.0 | 5.0 | 5.0 | 15.980 | O | 35 |
| 4130 | 10.0 | 80.0 | 5.0 | 5.0 | 14.129 | O | 35 |
| 4131 | 9.0 | 81.0 | 5.0 | 5.0 | 13.711 | O | 35 |
| 4132 | 8.0 | 82.0 | 5.0 | 5.0 | 13.293 | O | 35 |
| 4133 | 7.0 | 83.0 | 5.0 | 5.0 | 12.875 | O | 35 |
| 4134 | 6.0 | 84.0 | 5.0 | 5.0 | 12.457 | O | 35 |

[Table 63]

| 4135 | 5.0 | 85.0 | 5.0 | 5.0 | 12.039 | O | 35 |
|------|------|------|------|------|--------|---|----|
| 4136 | 4.0 | 86.0 | 5.0 | 5.0 | 11.622 | O | 35 |
| 4137 | 3.0 | 87.0 | 5.0 | 5.0 | 11.204 | O | 35 |
| 4138 | 2.0 | 88.0 | 5.0 | 5.0 | 10.786 | O | 35 |
| 4139 | 1.0 | 89.0 | 5.0 | 5.0 | 10.368 | O | 35 |
| 4140 | 0.0 | 90.0 | 5.0 | 5.0 | 9.950 | O | 35 |
| 4141 | 24.0 | 61.0 | 10.0 | 5.0 | 19.221 | X | 35 |
| 4142 | 23.4 | 61.6 | 10.0 | 5.0 | 19.007 | X | 35 |
| 4143 | 23.3 | 61.7 | 10.0 | 5.0 | 18.971 | O | 35 |
| 4144 | 23.0 | 62.0 | 10.0 | 5.0 | 18.864 | O | 35 |
| 4145 | 20.0 | 65.0 | 10.0 | 5.0 | 17.794 | O | 35 |
| 4146 | 15.0 | 70.0 | 10.0 | 5.0 | 16.010 | O | 35 |
| 4147 | 10.0 | 75.0 | 10.0 | 5.0 | 14.169 | O | 35 |
| 4148 | 9.0 | 76.0 | 10.0 | 5.0 | 13.751 | O | 35 |
| 4149 | 8.0 | 77.0 | 10.0 | 5.0 | 13.333 | O | 35 |
| 4150 | 7.0 | 78.0 | 10.0 | 5.0 | 12.915 | O | 35 |
| 4151 | 6.0 | 79.0 | 10.0 | 5.0 | 12.498 | O | 35 |
| 4152 | 5.0 | 80.0 | 10.0 | 5.0 | 12.080 | O | 35 |
| 4153 | 4.0 | 81.0 | 10.0 | 5.0 | 11.662 | O | 35 |
| 4154 | 3.0 | 82.0 | 10.0 | 5.0 | 11.244 | O | 35 |
| 4155 | 2.0 | 83.0 | 10.0 | 5.0 | 10.826 | O | 35 |
| 4156 | 1.0 | 84.0 | 10.0 | 5.0 | 10.408 | O | 35 |
| 4157 | 0.0 | 85.0 | 10.0 | 5.0 | 9.990 | O | 35 |
| 4158 | 24.0 | 56.0 | 15.0 | 5.0 | 19.251 | X | 35 |
| 4159 | 23.3 | 56.7 | 15.0 | 5.0 | 19.001 | X | 35 |
| 4160 | 23.2 | 56.8 | 15.0 | 5.0 | 18.965 | O | 35 |
| 4161 | 23.0 | 57.0 | 15.0 | 5.0 | 18.894 | O | 35 |
| 4162 | 20.0 | 60.0 | 15.0 | 5.0 | 17.824 | O | 35 |
| 4163 | 15.0 | 65.0 | 15.0 | 5.0 | 16.040 | O | 35 |
| 4164 | 10.0 | 70.0 | 15.0 | 5.0 | 14.209 | O | 35 |
| 4165 | 9.0 | 71.0 | 15.0 | 5.0 | 13.791 | O | 35 |
| 4166 | 8.0 | 72.0 | 15.0 | 5.0 | 13.373 | O | 35 |
| 4167 | 7.0 | 73.0 | 15.0 | 5.0 | 12.956 | O | 35 |
| 4168 | 6.0 | 74.0 | 15.0 | 5.0 | 12.538 | O | 35 |
| 4169 | 5.0 | 75.0 | 15.0 | 5.0 | 12.120 | O | 35 |
| 4170 | 4.0 | 76.0 | 15.0 | 5.0 | 11.702 | O | 35 |
| 4171 | 3.0 | 77.0 | 15.0 | 5.0 | 11.284 | O | 35 |
| 4172 | 2.0 | 78.0 | 15.0 | 5.0 | 10.866 | O | 35 |
| 4173 | 1.0 | 79.0 | 15.0 | 5.0 | 10.448 | O | 35 |
| 4174 | 0.0 | 80.0 | 15.0 | 5.0 | 10.030 | O | 35 |
| 4175 | 24.0 | 51.0 | 20.0 | 5.0 | 19.281 | X | 35 |
| 4176 | 23.3 | 51.7 | 20.0 | 5.0 | 19.031 | X | 35 |
| 4177 | 23.2 | 51.8 | 20.0 | 5.0 | 18.995 | O | 35 |
| 4178 | 23.0 | 52.0 | 20.0 | 5.0 | 18.924 | O | 35 |
| 4179 | 20.0 | 55.0 | 20.0 | 5.0 | 17.854 | O | 35 |
| 4180 | 15.0 | 60.0 | 20.0 | 5.0 | 16.070 | O | 35 |
| 4181 | 10.0 | 65.0 | 20.0 | 5.0 | 14.249 | O | 35 |
| 4182 | 9.0 | 66.0 | 20.0 | 5.0 | 13.832 | O | 35 |
| 4183 | 8.0 | 67.0 | 20.0 | 5.0 | 13.414 | O | 35 |
| 4184 | 7.0 | 68.0 | 20.0 | 5.0 | 12.996 | O | 35 |

[Table 64]

| 4185 | 6.0 | 69.0 | 20.0 | 5.0 | 12.578 | O | 35 |
|---|---|---|---|---|---|---|---|
| 4186 | 5.0 | 70.0 | 20.0 | 5.0 | 12.160 | O | 35 |
| 4187 | 4.0 | 71.0 | 20.0 | 5.0 | 11.742 | O | 35 |
| 4188 | 3.0 | 72.0 | 20.0 | 5.0 | 11.324 | O | 35 |
| 4189 | 2.0 | 73.0 | 20.0 | 5.0 | 10.906 | O | 35 |
| 4190 | 1.0 | 74.0 | 20.0 | 5.0 | 10.488 | O | 35 |
| 4191 | 0.0 | 75.0 | 20.0 | 5.0 | 10.070 | O | 35 |
| 4192 | 24.0 | 46.0 | 25.0 | 5.0 | 19.311 | X | 35 |
| 4193 | 23.2 | 46.8 | 25.0 | 5.0 | 19.025 | X | 35 |
| 4194 | 23.1 | 46.9 | 25.0 | 5.0 | 18.990 | O | 35 |
| 4195 | 23.0 | 47.0 | 25.0 | 5.0 | 18.954 | O | 35 |
| 4196 | 20.0 | 50.0 | 25.0 | 5.0 | 17.884 | O | 35 |
| 4197 | 15.0 | 55.0 | 25.0 | 5.0 | 16.100 | O | 35 |
| 4198 | 10.0 | 60.0 | 25.0 | 5.0 | 14.290 | O | 35 |
| 4199 | 9.0 | 61.0 | 25.0 | 5.0 | 13.872 | O | 35 |
| 4200 | 8.0 | 62.0 | 25.0 | 5.0 | 13.454 | O | 35 |
| 4201 | 7.0 | 63.0 | 25.0 | 5.0 | 13.036 | O | 35 |
| 4202 | 6.0 | 64.0 | 25.0 | 5.0 | 12.618 | O | 35 |
| 4203 | 5.0 | 65.0 | 25.0 | 5.0 | 12.200 | O | 35 |
| 4204 | 4.0 | 66.0 | 25.0 | 5.0 | 11.782 | O | 35 |
| 4205 | 3.0 | 67.0 | 25.0 | 5.0 | 11.364 | O | 35 |
| 4206 | 2.0 | 68.0 | 25.0 | 5.0 | 10.946 | O | 35 |
| 4207 | 1.0 | 69.0 | 25.0 | 5.0 | 10.528 | O | 35 |
| 4208 | 0.0 | 70.0 | 25.0 | 5.0 | 10.110 | O | 35 |
| 4209 | 24.0 | 41.0 | 30.0 | 5.0 | 19.341 | X | 35 |
| 4210 | 23.1 | 41.9 | 30.0 | 5.0 | 19.020 | X | 35 |
| 4211 | 23.0 | 42.0 | 30.0 | 5.0 | 18.984 | O | 35 |
| 4212 | 20.0 | 45.0 | 30.0 | 5.0 | 17.914 | O | 35 |
| 4213 | 15.0 | 50.0 | 30.0 | 5.0 | 16.130 | O | 35 |
| 4214 | 10.0 | 55.0 | 30.0 | 5.0 | 14.330 | O | 35 |
| 4215 | 9.0 | 56.0 | 30.0 | 5.0 | 13.912 | O | 35 |
| 4216 | 8.0 | 57.0 | 30.0 | 5.0 | 13.494 | O | 35 |
| 4217 | 7.0 | 58.0 | 30.0 | 5.0 | 13.076 | O | 35 |
| 4218 | 6.0 | 59.0 | 30.0 | 5.0 | 12.658 | O | 35 |
| 4219 | 5.0 | 60.0 | 30.0 | 5.0 | 12.240 | O | 35 |
| 4220 | 4.0 | 61.0 | 30.0 | 5.0 | 11.822 | O | 35 |
| 4221 | 3.0 | 62.0 | 30.0 | 5.0 | 11.404 | O | 35 |
| 4222 | 2.0 | 63.0 | 30.0 | 5.0 | 10.986 | O | 35 |
| 4223 | 1.0 | 64.0 | 30.0 | 5.0 | 10.568 | O | 35 |
| 4224 | 0.0 | 65.0 | 30.0 | 5.0 | 10.151 | O | 35 |
| 4225 | 23.0 | 37.0 | 35.0 | 5.0 | 19.014 | X | 35 |
| 4226 | 22.9 | 37.1 | 35.0 | 5.0 | 18.978 | O | 35 |
| 4227 | 22.0 | 38.0 | 35.0 | 5.0 | 18.657 | O | 35 |
| 4228 | 20.0 | 40.0 | 35.0 | 5.0 | 17.944 | O | 35 |
| 4229 | 15.0 | 45.0 | 35.0 | 5.0 | 16.160 | O | 35 |
| 4230 | 10.0 | 50.0 | 35.0 | 5.0 | 14.370 | O | 35 |
| 4231 | 9.0 | 51.0 | 35.0 | 5.0 | 13.952 | O | 35 |
| 4232 | 8.0 | 52.0 | 35.0 | 5.0 | 13.534 | O | 35 |
| 4233 | 7.0 | 53.0 | 35.0 | 5.0 | 13.116 | O | 35 |
| 4234 | 6.0 | 54.0 | 35.0 | 5.0 | 12.698 | O | 35 |

[Table 65]

| 4235 | 5.0 | 55.0 | 35.0 | 5.0 | 12.280 | O | 35 |
|---|---|---|---|---|---|---|---|
| 4236 | 4.0 | 56.0 | 35.0 | 5.0 | 11.862 | O | 35 |
| 4237 | 3.0 | 57.0 | 35.0 | 5.0 | 11.444 | O | 35 |
| 4238 | 2.0 | 58.0 | 35.0 | 5.0 | 11.027 | O | 35 |
| 4239 | 1.0 | 59.0 | 35.0 | 5.0 | 10.609 | O | 35 |
| 4240 | 0.0 | 60.0 | 35.0 | 5.0 | 10.191 | O | 35 |
| 4241 | 23.0 | 32.0 | 40.0 | 5.0 | 19.044 | X | 35 |
| 4242 | 22.9 | 32.1 | 40.0 | 5.0 | 19.008 | X | 35 |
| 4243 | 22.8 | 32.2 | 40.0 | 5.0 | 18.973 | O | 35 |
| 4244 | 22.0 | 33.0 | 40.0 | 5.0 | 18.687 | O | 35 |
| 4245 | 20.0 | 35.0 | 40.0 | 5.0 | 17.974 | O | 35 |
| 4246 | 15.0 | 40.0 | 40.0 | 5.0 | 16.189 | O | 35 |
| 4247 | 10.0 | 45.0 | 40.0 | 5.0 | 14.405 | O | 35 |
| 4248 | 9.0 | 46.0 | 40.0 | 5.0 | 13.992 | O | 35 |
| 4249 | 8.0 | 47.0 | 40.0 | 5.0 | 13.574 | O | 35 |
| 4250 | 7.0 | 48.0 | 40.0 | 5.0 | 13.156 | O | 35 |
| 4251 | 6.0 | 49.0 | 40.0 | 5.0 | 12.738 | O | 35 |
| 4252 | 5.0 | 50.0 | 40.0 | 5.0 | 12.320 | O | 35 |
| 4253 | 4.0 | 51.0 | 40.0 | 5.0 | 11.902 | O | 35 |
| 4254 | 3.0 | 52.0 | 40.0 | 5.0 | 11.485 | O | 35 |
| 4255 | 2.0 | 53.0 | 40.0 | 5.0 | 11.067 | O | 35 |
| 4256 | 1.0 | 54.0 | 40.0 | 5.0 | 10.649 | O | 35 |
| 4257 | 0.0 | 55.0 | 40.0 | 5.0 | 10.231 | O | 35 |
| 4258 | 23.0 | 27.0 | 45.0 | 5.0 | 19.074 | X | 35 |
| 4259 | 22.8 | 27.2 | 45.0 | 5.0 | 19.003 | X | 35 |
| 4260 | 22.7 | 27.3 | 45.0 | 5.0 | 18.967 | O | 35 |
| 4261 | 22.0 | 28.0 | 45.0 | 5.0 | 18.717 | O | 35 |
| 4262 | 20.0 | 30.0 | 45.0 | 5.0 | 18.004 | O | 35 |
| 4263 | 15.0 | 35.0 | 45.0 | 5.0 | 16.219 | O | 35 |
| 4264 | 10.0 | 40.0 | 45.0 | 5.0 | 14.435 | O | 35 |
| 4265 | 9.0 | 41.0 | 45.0 | 5.0 | 14.032 | O | 35 |
| 4266 | 8.0 | 42.0 | 45.0 | 5.0 | 13.614 | O | 35 |
| 4267 | 7.0 | 43.0 | 45.0 | 5.0 | 13.196 | O | 35 |
| 4268 | 6.0 | 44.0 | 45.0 | 5.0 | 12.778 | O | 35 |
| 4269 | 5.0 | 45.0 | 45.0 | 5.0 | 12.361 | O | 35 |
| 4270 | 4.0 | 46.0 | 45.0 | 5.0 | 11.943 | O | 35 |
| 4271 | 3.0 | 47.0 | 45.0 | 5.0 | 11.525 | O | 35 |
| 4272 | 2.0 | 48.0 | 45.0 | 5.0 | 11.107 | O | 35 |
| 4273 | 1.0 | 49.0 | 45.0 | 5.0 | 10.689 | O | 35 |
| 4274 | 0.0 | 50.0 | 45.0 | 5.0 | 10.271 | O | 35 |
| 4275 | 23.0 | 22.0 | 50.0 | 5.0 | 19.104 | X | 35 |
| 4276 | 22.8 | 22.2 | 50.0 | 5.0 | 19.033 | X | 35 |
| 4277 | 22.7 | 22.3 | 50.0 | 5.0 | 18.997 | O | 35 |
| 4278 | 22.0 | 23.0 | 50.0 | 5.0 | 18.747 | O | 35 |
| 4279 | 20.0 | 25.0 | 50.0 | 5.0 | 18.033 | O | 35 |
| 4280 | 15.0 | 30.0 | 50.0 | 5.0 | 16.249 | O | 35 |
| 4281 | 10.0 | 35.0 | 50.0 | 5.0 | 14.465 | O | 35 |
| 4282 | 9.0 | 36.0 | 50.0 | 5.0 | 14.072 | O | 35 |
| 4283 | 8.0 | 37.0 | 50.0 | 5.0 | 13.654 | O | 35 |
| 4284 | 7.0 | 38.0 | 50.0 | 5.0 | 13.237 | O | 35 |

[Table 66]

| 4285 | 6.0 | 39.0 | 50.0 | 5.0 | 12.819 | O | 35 |
|---|---|---|---|---|---|---|---|
| 4286 | 5.0 | 40.0 | 50.0 | 5.0 | 12.401 | O | 35 |
| 4287 | 4.0 | 41.0 | 50.0 | 5.0 | 11.983 | O | 35 |
| 4288 | 3.0 | 42.0 | 50.0 | 5.0 | 11.565 | O | 35 |
| 4289 | 2.0 | 43.0 | 50.0 | 5.0 | 11.147 | O | 35 |
| 4290 | 1.0 | 44.0 | 50.0 | 5.0 | 10.729 | O | 35 |
| 4291 | 0.0 | 45.0 | 50.0 | 5.0 | 10.311 | O | 35 |
| 4292 | 23.0 | 17.0 | 55.0 | 5.0 | 19.134 | X | 35 |
| 4293 | 22.7 | 17.3 | 55.0 | 5.0 | 19.027 | X | 35 |
| 4294 | 22.6 | 17.4 | 55.0 | 5.0 | 18.991 | O | 35 |
| 4295 | 22.0 | 18.0 | 55.0 | 5.0 | 18.777 | O | 35 |
| 4296 | 20.0 | 20.0 | 55.0 | 5.0 | 18.063 | O | 35 |
| 4297 | 15.0 | 25.0 | 55.0 | 5.0 | 16.279 | O | 35 |
| 4298 | 10.0 | 30.0 | 55.0 | 5.0 | 14.495 | O | 35 |
| 4299 | 9.0 | 31.0 | 55.0 | 5.0 | 14.112 | O | 35 |
| 4300 | 8.0 | 32.0 | 55.0 | 5.0 | 13.695 | O | 35 |
| 4301 | 7.0 | 33.0 | 55.0 | 5.0 | 13.277 | O | 35 |
| 4302 | 6.0 | 34.0 | 55.0 | 5.0 | 12.859 | O | 35 |
| 4303 | 5.0 | 35.0 | 55.0 | 5.0 | 12.441 | O | 35 |
| 4304 | 4.0 | 36.0 | 55.0 | 5.0 | 12.023 | O | 35 |
| 4305 | 3.0 | 37.0 | 55.0 | 5.0 | 11.605 | O | 35 |
| 4306 | 2.0 | 38.0 | 55.0 | 5.0 | 11.187 | O | 35 |
| 4307 | 1.0 | 39.0 | 55.0 | 5.0 | 10.769 | O | 35 |
| 4308 | 0.0 | 40.0 | 55.0 | 5.0 | 10.351 | O | 35 |
| 4309 | 23.0 | 12.0 | 60.0 | 5.0 | 19.164 | X | 35 |
| 4310 | 22.6 | 12.4 | 60.0 | 5.0 | 19.021 | X | 35 |
| 4311 | 22.5 | 12.5 | 60.0 | 5.0 | 18.985 | O | 35 |
| 4312 | 22.0 | 13.0 | 60.0 | 5.0 | 18.807 | O | 35 |
| 4313 | 20.0 | 15.0 | 60.0 | 5.0 | 18.093 | O | 35 |
| 4314 | 15.0 | 20.0 | 60.0 | 5.0 | 16.309 | O | 35 |
| 4315 | 10.0 | 25.0 | 60.0 | 5.0 | 14.525 | O | 35 |
| 4316 | 9.0 | 26.0 | 60.0 | 5.0 | 14.153 | O | 35 |
| 4317 | 8.0 | 27.0 | 60.0 | 5.0 | 13.735 | O | 35 |
| 4318 | 7.0 | 28.0 | 60.0 | 5.0 | 13.317 | O | 35 |
| 4319 | 6.0 | 29.0 | 60.0 | 5.0 | 12.899 | O | 35 |
| 4320 | 5.0 | 30.0 | 60.0 | 5.0 | 12.481 | O | 35 |
| 4321 | 4.0 | 31.0 | 60.0 | 5.0 | 12.063 | O | 35 |
| 4322 | 3.0 | 32.0 | 60.0 | 5.0 | 11.645 | O | 35 |
| 4323 | 2.0 | 33.0 | 60.0 | 5.0 | 11.227 | O | 35 |
| 4324 | 1.0 | 34.0 | 60.0 | 5.0 | 10.809 | O | 35 |
| 4325 | 0.0 | 35.0 | 60.0 | 5.0 | 10.391 | O | 35 |
| 4326 | 23.0 | 7.0 | 65.0 | 5.0 | 19.194 | X | 35 |
| 4327 | 22.5 | 7.5 | 65.0 | 5.0 | 19.015 | X | 35 |
| 4328 | 22.4 | 7.6 | 65.0 | 5.0 | 18.980 | O | 35 |
| 4329 | 22.0 | 8.0 | 65.0 | 5.0 | 18.837 | O | 35 |
| 4330 | 20.0 | 10.0 | 65.0 | 5.0 | 18.123 | O | 35 |
| 4331 | 15.0 | 15.0 | 65.0 | 5.0 | 16.339 | O | 35 |
| 4332 | 10.0 | 20.0 | 65.0 | 5.0 | 14.555 | O | 35 |
| 4333 | 9.0 | 21.0 | 65.0 | 5.0 | 14.193 | O | 35 |
| 4334 | 8.0 | 22.0 | 65.0 | 5.0 | 13.775 | O | 35 |

[Table 67]

| 4335 | 7.0 | 23.0 | 65.0 | 5.0 | 13.357 | O | 35 |
|------|------|------|------|------|--------|---|----|
| 4336 | 6.0 | 24.0 | 65.0 | 5.0 | 12.939 | O | 35 |
| 4337 | 5.0 | 25.0 | 65.0 | 5.0 | 12.521 | O | 35 |
| 4338 | 4.0 | 26.0 | 65.0 | 5.0 | 12.103 | O | 35 |
| 4339 | 3.0 | 27.0 | 65.0 | 5.0 | 11.685 | O | 35 |
| 4340 | 2.0 | 28.0 | 65.0 | 5.0 | 11.267 | O | 35 |
| 4341 | 1.0 | 29.0 | 65.0 | 5.0 | 10.849 | O | 35 |
| 4342 | 0.0 | 30.0 | 65.0 | 5.0 | 10.431 | O | 35 |
| 4343 | 23.0 | 2.0 | 70.0 | 5.0 | 19.224 | X | 35 |
| 4344 | 22.4 | 2.6 | 70.0 | 5.0 | 19.010 | X | 35 |
| 4345 | 22.3 | 2.7 | 70.0 | 5.0 | 18.974 | O | 35 |
| 4346 | 22.0 | 3.0 | 70.0 | 5.0 | 18.867 | O | 35 |
| 4347 | 20.0 | 5.0 | 70.0 | 5.0 | 18.153 | O | 35 |
| 4348 | 15.0 | 10.0 | 70.0 | 5.0 | 16.369 | O | 35 |
| 4349 | 10.0 | 15.0 | 70.0 | 5.0 | 14.585 | O | 35 |
| 4350 | 9.0 | 16.0 | 70.0 | 5.0 | 14.228 | O | 35 |
| 4351 | 8.0 | 17.0 | 70.0 | 5.0 | 13.815 | O | 35 |
| 4352 | 7.0 | 18.0 | 70.0 | 5.0 | 13.397 | O | 35 |
| 4353 | 6.0 | 19.0 | 70.0 | 5.0 | 12.979 | O | 35 |
| 4354 | 5.0 | 20.0 | 70.0 | 5.0 | 12.561 | O | 35 |
| 4355 | 4.0 | 21.0 | 70.0 | 5.0 | 12.143 | O | 35 |
| 4356 | 3.0 | 22.0 | 70.0 | 5.0 | 11.725 | O | 35 |
| 4357 | 2.0 | 23.0 | 70.0 | 5.0 | 11.307 | O | 35 |
| 4358 | 1.0 | 24.0 | 70.0 | 5.0 | 10.890 | O | 35 |
| 4359 | 0.0 | 25.0 | 70.0 | 5.0 | 10.472 | O | 35 |
| 4360 | 24.0 | 61.0 | 5.0 | 10.0 | 19.136 | X | 69 |
| 4361 | 23.7 | 61.3 | 5.0 | 10.0 | 19.029 | X | 69 |
| 4362 | 23.6 | 61.4 | 5.0 | 10.0 | 18.993 | O | 69 |
| 4363 | 23.0 | 62.0 | 5.0 | 10.0 | 18.779 | O | 69 |
| 4364 | 20.0 | 65.0 | 5.0 | 10.0 | 17.708 | O | 69 |
| 4365 | 15.0 | 70.0 | 5.0 | 10.0 | 15.924 | O | 69 |
| 4366 | 10.0 | 75.0 | 5.0 | 10.0 | 14.110 | O | 69 |
| 4367 | 9.0 | 76.0 | 5.0 | 10.0 | 13.692 | O | 69 |
| 4368 | 8.0 | 77.0 | 5.0 | 10.0 | 13.274 | O | 69 |
| 4369 | 7.0 | 78.0 | 5.0 | 10.0 | 12.856 | O | 69 |
| 4370 | 6.0 | 79.0 | 5.0 | 10.0 | 12.438 | O | 69 |
| 4371 | 5.0 | 80.0 | 5.0 | 10.0 | 12.020 | O | 69 |
| 4372 | 4.0 | 81.0 | 5.0 | 10.0 | 11.602 | O | 69 |
| 4373 | 3.0 | 82.0 | 5.0 | 10.0 | 11.185 | O | 69 |
| 4374 | 2.0 | 83.0 | 5.0 | 10.0 | 10.767 | O | 69 |
| 4375 | 1.0 | 84.0 | 5.0 | 10.0 | 10.349 | O | 69 |
| 4376 | 0.0 | 85.0 | 5.0 | 10.0 | 9.931 | O | 69 |
| 4377 | 24.0 | 56.0 | 10.0 | 10.0 | 19.166 | X | 69 |
| 4378 | 23.6 | 56.4 | 10.0 | 10.0 | 19.023 | X | 69 |
| 4379 | 23.5 | 56.5 | 10.0 | 10.0 | 18.987 | O | 69 |
| 4380 | 23.0 | 57.0 | 10.0 | 10.0 | 18.809 | O | 69 |
| 4381 | 20.0 | 60.0 | 10.0 | 10.0 | 17.738 | O | 69 |
| 4382 | 15.0 | 65.0 | 10.0 | 10.0 | 15.954 | O | 69 |
| 4383 | 10.0 | 70.0 | 10.0 | 10.0 | 14.150 | O | 69 |
| 4384 | 9.0 | 71.0 | 10.0 | 10.0 | 13.732 | O | 69 |

[Table 68]

| 4385 | 8.0 | 72.0 | 10.0 | 10.0 | 13.314 | O | 69 |
|------|------|------|------|------|--------|---|-----|
| 4386 | 7.0 | 73.0 | 10.0 | 10.0 | 12.896 | O | 69 |
| 4387 | 6.0 | 74.0 | 10.0 | 10.0 | 12.478 | O | 69 |
| 4388 | 5.0 | 75.0 | 10.0 | 10.0 | 12.061 | O | 69 |
| 4389 | 4.0 | 76.0 | 10.0 | 10.0 | 11.643 | O | 69 |
| 4390 | 3.0 | 77.0 | 10.0 | 10.0 | 11.225 | O | 69 |
| 4391 | 2.0 | 78.0 | 10.0 | 10.0 | 10.807 | O | 69 |
| 4392 | 1.0 | 79.0 | 10.0 | 10.0 | 10.389 | O | 69 |
| 4393 | 0.0 | 80.0 | 10.0 | 10.0 | 9.971 | O | 69 |
| 4394 | 24.0 | 51.0 | 15.0 | 10.0 | 19.196 | X | 69 |
| 4395 | 23.5 | 51.5 | 15.0 | 10.0 | 19.017 | X | 69 |
| 4396 | 23.4 | 51.6 | 15.0 | 10.0 | 18.982 | O | 69 |
| 4397 | 23.0 | 52.0 | 15.0 | 10.0 | 18.839 | O | 69 |
| 4398 | 20.0 | 55.0 | 15.0 | 10.0 | 17.768 | O | 69 |
| 4399 | 15.0 | 60.0 | 15.0 | 10.0 | 15.984 | O | 69 |
| 4400 | 10.0 | 65.0 | 15.0 | 10.0 | 14.190 | O | 69 |
| 4401 | 9.0 | 66.0 | 15.0 | 10.0 | 13.772 | O | 69 |
| 4402 | 8.0 | 67.0 | 15.0 | 10.0 | 13.354 | O | 69 |
| 4403 | 7.0 | 68.0 | 15.0 | 10.0 | 12.937 | O | 69 |
| 4404 | 6.0 | 69.0 | 15.0 | 10.0 | 12.519 | O | 69 |
| 4405 | 5.0 | 70.0 | 15.0 | 10.0 | 12.101 | O | 69 |
| 4406 | 4.0 | 71.0 | 15.0 | 10.0 | 11.683 | O | 69 |
| 4407 | 3.0 | 72.0 | 15.0 | 10.0 | 11.265 | O | 69 |
| 4408 | 2.0 | 73.0 | 15.0 | 10.0 | 10.847 | O | 69 |
| 4409 | 1.0 | 74.0 | 15.0 | 10.0 | 10.429 | O | 69 |
| 4410 | 0.0 | 75.0 | 15.0 | 10.0 | 10.011 | O | 69 |
| 4411 | 24.0 | 46.0 | 20.0 | 10.0 | 19.226 | X | 69 |
| 4412 | 23.4 | 46.6 | 20.0 | 10.0 | 19.012 | X | 69 |
| 4413 | 23.3 | 46.7 | 20.0 | 10.0 | 18.976 | O | 69 |
| 4414 | 23.0 | 47.0 | 20.0 | 10.0 | 18.869 | O | 69 |
| 4415 | 20.0 | 50.0 | 20.0 | 10.0 | 17.798 | O | 69 |
| 4416 | 15.0 | 55.0 | 20.0 | 10.0 | 16.014 | O | 69 |
| 4417 | 10.0 | 60.0 | 20.0 | 10.0 | 14.230 | O | 69 |
| 4418 | 9.0 | 61.0 | 20.0 | 10.0 | 13.812 | O | 69 |
| 4419 | 8.0 | 62.0 | 20.0 | 10.0 | 13.395 | O | 69 |
| 4420 | 7.0 | 63.0 | 20.0 | 10.0 | 12.977 | O | 69 |
| 4421 | 6.0 | 64.0 | 20.0 | 10.0 | 12.559 | O | 69 |
| 4422 | 5.0 | 65.0 | 20.0 | 10.0 | 12.141 | O | 69 |
| 4423 | 4.0 | 66.0 | 20.0 | 10.0 | 11.723 | O | 69 |
| 4424 | 3.0 | 67.0 | 20.0 | 10.0 | 11.305 | O | 69 |
| 4425 | 2.0 | 68.0 | 20.0 | 10.0 | 10.887 | O | 69 |
| 4426 | 1.0 | 69.0 | 20.0 | 10.0 | 10.469 | O | 69 |
| 4427 | 0.0 | 70.0 | 20.0 | 10.0 | 10.051 | O | 69 |
| 4428 | 24.0 | 41.0 | 25.0 | 10.0 | 19.256 | X | 69 |
| 4429 | 23.3 | 41.7 | 25.0 | 10.0 | 19.006 | X | 69 |
| 4430 | 23.2 | 41.8 | 25.0 | 10.0 | 18.970 | O | 69 |
| 4431 | 23.0 | 42.0 | 25.0 | 10.0 | 18.899 | O | 69 |
| 4432 | 20.0 | 45.0 | 25.0 | 10.0 | 17.828 | O | 69 |
| 4433 | 15.0 | 50.0 | 25.0 | 10.0 | 16.044 | O | 69 |
| 4434 | 10.0 | 55.0 | 25.0 | 10.0 | 14.260 | O | 69 |

[Table 69]

| 4435 | 9.0 | 56.0 | 25.0 | 10.0 | 13.853 | O | 69 |
|------|-----|------|------|------|--------|---|----|
| 4436 | 8.0 | 57.0 | 25.0 | 10.0 | 13.435 | O | 69 |
| 4437 | 7.0 | 58.0 | 25.0 | 10.0 | 13.017 | O | 69 |
| 4438 | 6.0 | 59.0 | 25.0 | 10.0 | 12.599 | O | 69 |
| 4439 | 5.0 | 60.0 | 25.0 | 10.0 | 12.181 | O | 69 |
| 4440 | 4.0 | 61.0 | 25.0 | 10.0 | 11.763 | O | 69 |
| 4441 | 3.0 | 62.0 | 25.0 | 10.0 | 11.345 | O | 69 |
| 4442 | 2.0 | 63.0 | 25.0 | 10.0 | 10.927 | O | 69 |
| 4443 | 1.0 | 64.0 | 25.0 | 10.0 | 10.509 | O | 69 |
| 4444 | 0.0 | 65.0 | 25.0 | 10.0 | 10.091 | O | 69 |
| 4445 | 24.0 | 36.0 | 30.0 | 10.0 | 19.286 | X | 69 |
| 4446 | 23.2 | 36.8 | 30.0 | 10.0 | 19.000 | X | 69 |
| 4447 | 23.1 | 36.9 | 30.0 | 10.0 | 18.964 | O | 69 |
| 4448 | 23.0 | 37.0 | 30.0 | 10.0 | 18.929 | O | 69 |
| 4449 | 20.0 | 40.0 | 30.0 | 10.0 | 17.858 | O | 69 |
| 4450 | 15.0 | 45.0 | 30.0 | 10.0 | 16.074 | O | 69 |
| 4451 | 10.0 | 50.0 | 30.0 | 10.0 | 14.290 | O | 69 |
| 4452 | 9.0 | 51.0 | 30.0 | 10.0 | 13.893 | O | 69 |
| 4453 | 8.0 | 52.0 | 30.0 | 10.0 | 13.475 | O | 69 |
| 4454 | 7.0 | 53.0 | 30.0 | 10.0 | 13.057 | O | 69 |
| 4455 | 6.0 | 54.0 | 30.0 | 10.0 | 12.639 | O | 69 |
| 4456 | 5.0 | 55.0 | 30.0 | 10.0 | 12.221 | O | 69 |
| 4457 | 4.0 | 56.0 | 30.0 | 10.0 | 11.803 | O | 69 |
| 4458 | 3.0 | 57.0 | 30.0 | 10.0 | 11.385 | O | 69 |
| 4459 | 2.0 | 58.0 | 30.0 | 10.0 | 10.967 | O | 69 |
| 4460 | 1.0 | 59.0 | 30.0 | 10.0 | 10.549 | O | 69 |
| 4461 | 0.0 | 60.0 | 30.0 | 10.0 | 10.132 | O | 69 |
| 4462 | 24.0 | 31.0 | 35.0 | 10.0 | 19.316 | X | 69 |
| 4463 | 23.2 | 31.8 | 35.0 | 10.0 | 19.030 | X | 69 |
| 4464 | 23.1 | 31.9 | 35.0 | 10.0 | 18.994 | O | 69 |
| 4465 | 23.0 | 32.0 | 35.0 | 10.0 | 18.959 | O | 69 |
| 4466 | 20.0 | 35.0 | 35.0 | 10.0 | 17.888 | O | 69 |
| 4467 | 15.0 | 40.0 | 35.0 | 10.0 | 16.104 | O | 69 |
| 4468 | 10.0 | 45.0 | 35.0 | 10.0 | 14.320 | O | 69 |
| 4469 | 9.0 | 46.0 | 35.0 | 10.0 | 13.933 | O | 69 |
| 4470 | 8.0 | 47.0 | 35.0 | 10.0 | 13.515 | O | 69 |
| 4471 | 7.0 | 48.0 | 35.0 | 10.0 | 13.097 | O | 69 |
| 4472 | 6.0 | 49.0 | 35.0 | 10.0 | 12.679 | O | 69 |
| 4473 | 5.0 | 50.0 | 35.0 | 10.0 | 12.261 | O | 69 |
| 4474 | 4.0 | 51.0 | 35.0 | 10.0 | 11.843 | O | 69 |
| 4475 | 3.0 | 52.0 | 35.0 | 10.0 | 11.425 | O | 69 |
| 4476 | 2.0 | 53.0 | 35.0 | 10.0 | 11.007 | O | 69 |
| 4477 | 1.0 | 54.0 | 35.0 | 10.0 | 10.590 | O | 69 |
| 4478 | 0.0 | 55.0 | 35.0 | 10.0 | 10.172 | O | 69 |
| 4479 | 24.0 | 26.0 | 40.0 | 10.0 | 19.346 | X | 69 |
| 4480 | 23.1 | 26.9 | 40.0 | 10.0 | 19.024 | X | 69 |
| 4481 | 23.0 | 27.0 | 40.0 | 10.0 | 18.989 | O | 69 |
| 4482 | 20.0 | 30.0 | 40.0 | 10.0 | 17.918 | O | 69 |
| 4483 | 15.0 | 35.0 | 40.0 | 10.0 | 16.134 | O | 69 |
| 4484 | 10.0 | 40.0 | 40.0 | 10.0 | 14.350 | O | 69 |

[Table 70]

| 4485 | 9.0 | 41.0 | 40.0 | 10.0 | 13.973 | O | 69 |
|---|---|---|---|---|---|---|---|
| 4486 | 8.0 | 42.0 | 40.0 | 10.0 | 13.555 | O | 69 |
| 4487 | 7.0 | 43.0 | 40.0 | 10.0 | 13.137 | O | 69 |
| 4488 | 6.0 | 44.0 | 40.0 | 10.0 | 12.719 | O | 69 |
| 4489 | 5.0 | 45.0 | 40.0 | 10.0 | 12.301 | O | 69 |
| 4490 | 4.0 | 46.0 | 40.0 | 10.0 | 11.883 | O | 69 |
| 4491 | 3.0 | 47.0 | 40.0 | 10.0 | 11.466 | O | 69 |
| 4492 | 2.0 | 48.0 | 40.0 | 10.0 | 11.048 | O | 69 |
| 4493 | 1.0 | 49.0 | 40.0 | 10.0 | 10.630 | O | 69 |
| 4494 | 0.0 | 50.0 | 40.0 | 10.0 | 10.212 | O | 69 |
| 4495 | 23.0 | 22.0 | 45.0 | 10.0 | 19.019 | X | 69 |
| 4496 | 22.9 | 22.1 | 45.0 | 10.0 | 18.983 | O | 69 |
| 4497 | 22.0 | 23.0 | 45.0 | 10.0 | 18.662 | O | 69 |
| 4498 | 20.0 | 25.0 | 45.0 | 10.0 | 17.948 | O | 69 |
| 4499 | 15.0 | 30.0 | 45.0 | 10.0 | 16.164 | O | 69 |
| 4500 | 10.0 | 35.0 | 45.0 | 10.0 | 14.380 | O | 69 |
| 4501 | 9.0 | 36.0 | 45.0 | 10.0 | 14.013 | O | 69 |
| 4502 | 8.0 | 37.0 | 45.0 | 10.0 | 13.595 | O | 69 |
| 4503 | 7.0 | 38.0 | 45.0 | 10.0 | 13.177 | O | 69 |
| 4504 | 6.0 | 39.0 | 45.0 | 10.0 | 12.759 | O | 69 |
| 4505 | 5.0 | 40.0 | 45.0 | 10.0 | 12.341 | O | 69 |
| 4506 | 4.0 | 41.0 | 45.0 | 10.0 | 11.924 | O | 69 |
| 4507 | 3.0 | 42.0 | 45.0 | 10.0 | 11.506 | O | 69 |
| 4508 | 2.0 | 43.0 | 45.0 | 10.0 | 11.088 | O | 69 |
| 4509 | 1.0 | 44.0 | 45.0 | 10.0 | 10.670 | O | 69 |
| 4510 | 0.0 | 45.0 | 45.0 | 10.0 | 10.252 | O | 69 |
| 4511 | 23.0 | 17.0 | 50.0 | 10.0 | 19.049 | X | 69 |
| 4512 | 22.9 | 17.1 | 50.0 | 10.0 | 19.013 | X | 69 |
| 4513 | 22.8 | 17.2 | 50.0 | 10.0 | 18.977 | O | 69 |
| 4514 | 22.0 | 18.0 | 50.0 | 10.0 | 18.692 | O | 69 |
| 4515 | 20.0 | 20.0 | 50.0 | 10.0 | 17.978 | O | 69 |
| 4516 | 15.0 | 25.0 | 50.0 | 10.0 | 16.194 | O | 69 |
| 4517 | 10.0 | 30.0 | 50.0 | 10.0 | 14.410 | O | 69 |
| 4518 | 9.0 | 31.0 | 50.0 | 10.0 | 14.053 | O | 69 |
| 4519 | 8.0 | 32.0 | 50.0 | 10.0 | 13.635 | O | 69 |
| 4520 | 7.0 | 33.0 | 50.0 | 10.0 | 13.217 | O | 69 |
| 4521 | 6.0 | 34.0 | 50.0 | 10.0 | 12.800 | O | 69 |
| 4522 | 5.0 | 35.0 | 50.0 | 10.0 | 12.382 | O | 69 |
| 4523 | 4.0 | 36.0 | 50.0 | 10.0 | 11.964 | O | 69 |
| 4524 | 3.0 | 37.0 | 50.0 | 10.0 | 11.546 | O | 69 |
| 4525 | 2.0 | 38.0 | 50.0 | 10.0 | 11.128 | O | 69 |
| 4526 | 1.0 | 39.0 | 50.0 | 10.0 | 10.710 | O | 69 |
| 4527 | 0.0 | 40.0 | 50.0 | 10.0 | 10.292 | O | 69 |
| 4528 | 23.0 | 12.0 | 55.0 | 10.0 | 19.079 | X | 69 |
| 4529 | 22.8 | 12.2 | 55.0 | 10.0 | 19.007 | X | 69 |
| 4530 | 22.7 | 12.3 | 55.0 | 10.0 | 18.972 | O | 69 |
| 4531 | 22.0 | 13.0 | 55.0 | 10.0 | 18.722 | O | 69 |
| 4532 | 20.0 | 15.0 | 55.0 | 10.0 | 18.008 | O | 69 |
| 4533 | 15.0 | 20.0 | 55.0 | 10.0 | 16.224 | O | 69 |
| 4534 | 10.0 | 25.0 | 55.0 | 10.0 | 14.440 | O | 69 |

[Table 71]

| 4535 | 9.0 | 26.0 | 55.0 | 10.0 | 14.083 | O | 69 |
|------|------|------|------|------|--------|---|-----|
| 4536 | 8.0 | 27.0 | 55.0 | 10.0 | 13.676 | O | 69 |
| 4537 | 7.0 | 28.0 | 55.0 | 10.0 | 13.258 | O | 69 |
| 4538 | 6.0 | 29.0 | 55.0 | 10.0 | 12.840 | O | 69 |
| 4539 | 5.0 | 30.0 | 55.0 | 10.0 | 12.422 | O | 69 |
| 4540 | 4.0 | 31.0 | 55.0 | 10.0 | 12.004 | O | 69 |
| 4541 | 3.0 | 32.0 | 55.0 | 10.0 | 11.586 | O | 69 |
| 4542 | 2.0 | 33.0 | 55.0 | 10.0 | 11.168 | O | 69 |
| 4543 | 1.0 | 34.0 | 55.0 | 10.0 | 10.750 | O | 69 |
| 4544 | 0.0 | 35.0 | 55.0 | 10.0 | 10.332 | O | 69 |
| 4545 | 23.0 | 7.0 | 60.0 | 10.0 | 19.109 | X | 69 |
| 4546 | 22.7 | 7.3 | 60.0 | 10.0 | 19.002 | X | 69 |
| 4547 | 22.6 | 7.4 | 60.0 | 10.0 | 18.966 | O | 69 |
| 4548 | 22.0 | 8.0 | 60.0 | 10.0 | 18.752 | O | 69 |
| 4549 | 20.0 | 10.0 | 60.0 | 10.0 | 18.038 | O | 69 |
| 4550 | 15.0 | 15.0 | 60.0 | 10.0 | 16.254 | O | 69 |
| 4551 | 10.0 | 20.0 | 60.0 | 10.0 | 14.470 | O | 69 |
| 4552 | 9.0 | 21.0 | 60.0 | 10.0 | 14.113 | O | 69 |
| 4553 | 8.0 | 22.0 | 60.0 | 10.0 | 13.716 | O | 69 |
| 4554 | 7.0 | 23.0 | 60.0 | 10.0 | 13.298 | O | 69 |
| 4555 | 6.0 | 24.0 | 60.0 | 10.0 | 12.880 | O | 69 |
| 4556 | 5.0 | 25.0 | 60.0 | 10.0 | 12.462 | O | 69 |
| 4557 | 4.0 | 26.0 | 60.0 | 10.0 | 12.044 | O | 69 |
| 4558 | 3.0 | 27.0 | 60.0 | 10.0 | 11.626 | O | 69 |
| 4559 | 2.0 | 28.0 | 60.0 | 10.0 | 11.208 | O | 69 |
| 4560 | 1.0 | 29.0 | 60.0 | 10.0 | 10.790 | O | 69 |
| 4561 | 0.0 | 30.0 | 60.0 | 10.0 | 10.372 | O | 69 |
| 4562 | 23.0 | 2.0 | 65.0 | 10.0 | 19.139 | X | 69 |
| 4563 | 22.7 | 2.3 | 65.0 | 10.0 | 19.032 | X | 69 |
| 4564 | 22.6 | 2.4 | 65.0 | 10.0 | 18.996 | O | 69 |
| 4565 | 22.0 | 3.0 | 65.0 | 10.0 | 18.782 | O | 69 |
| 4566 | 20.0 | 5.0 | 65.0 | 10.0 | 18.068 | O | 69 |
| 4567 | 15.0 | 10.0 | 65.0 | 10.0 | 16.284 | O | 69 |
| 4568 | 10.0 | 15.0 | 65.0 | 10.0 | 14.500 | O | 69 |
| 4569 | 9.0 | 16.0 | 65.0 | 10.0 | 14.143 | O | 69 |
| 4570 | 8.0 | 17.0 | 65.0 | 10.0 | 13.756 | O | 69 |
| 4571 | 7.0 | 18.0 | 65.0 | 10.0 | 13.338 | O | 69 |
| 4572 | 6.0 | 19.0 | 65.0 | 10.0 | 12.920 | O | 69 |
| 4573 | 5.0 | 20.0 | 65.0 | 10.0 | 12.502 | O | 69 |
| 4574 | 4.0 | 21.0 | 65.0 | 10.0 | 12.084 | O | 69 |
| 4575 | 3.0 | 22.0 | 65.0 | 10.0 | 11.666 | O | 69 |
| 4576 | 2.0 | 23.0 | 65.0 | 10.0 | 11.248 | O | 69 |
| 4577 | 1.0 | 24.0 | 65.0 | 10.0 | 10.830 | O | 69 |
| 4578 | 0.0 | 25.0 | 65.0 | 10.0 | 10.412 | O | 69 |
| 4579 | 24.0 | 56.0 | 5.0 | 15.0 | 19.080 | X | 102 |
| 4580 | 23.8 | 56.2 | 5.0 | 15.0 | 19.009 | X | 102 |
| 4581 | 23.7 | 56.3 | 5.0 | 15.0 | 18.973 | O | 102 |
| 4582 | 23.0 | 57.0 | 5.0 | 15.0 | 18.724 | O | 102 |
| 4583 | 20.0 | 60.0 | 5.0 | 15.0 | 17.653 | O | 102 |
| 4584 | 15.0 | 65.0 | 5.0 | 15.0 | 15.869 | O | 102 |

[Table 72]

| 4585 | 10.0 | 70.0 | 5.0 | 15.0 | 14.085 | O | 102 |
|---|---|---|---|---|---|---|---|
| 4586 | 9.0 | 71.0 | 5.0 | 15.0 | 13.673 | O | 102 |
| 4587 | 8.0 | 72.0 | 5.0 | 15.0 | 13.255 | O | 102 |
| 4588 | 7.0 | 73.0 | 5.0 | 15.0 | 12.837 | O | 102 |
| 4589 | 6.0 | 74.0 | 5.0 | 15.0 | 12.419 | O | 102 |
| 4590 | 5.0 | 75.0 | 5.0 | 15.0 | 12.001 | O | 102 |
| 4591 | 4.0 | 76.0 | 5.0 | 15.0 | 11.583 | O | 102 |
| 4592 | 3.0 | 77.0 | 5.0 | 15.0 | 11.166 | O | 102 |
| 4593 | 2.0 | 78.0 | 5.0 | 15.0 | 10.748 | O | 102 |
| 4594 | 1.0 | 79.0 | 5.0 | 15.0 | 10.330 | O | 102 |
| 4595 | 0.0 | 80.0 | 5.0 | 15.0 | 9.912 | O | 102 |
| 4596 | 24.0 | 51.0 | 10.0 | 15.0 | 19.110 | X | 102 |
| 4597 | 23.7 | 51.3 | 10.0 | 15.0 | 19.003 | X | 102 |
| 4598 | 23.6 | 51.4 | 10.0 | 15.0 | 18.968 | O | 102 |
| 4599 | 23.0 | 52.0 | 10.0 | 15.0 | 18.754 | O | 102 |
| 4600 | 20.0 | 55.0 | 10.0 | 15.0 | 17.683 | O | 102 |
| 4601 | 15.0 | 60.0 | 10.0 | 15.0 | 15.899 | O | 102 |
| 4602 | 10.0 | 65.0 | 10.0 | 15.0 | 14.115 | O | 102 |
| 4603 | 9.0 | 66.0 | 10.0 | 15.0 | 13.713 | O | 102 |
| 4604 | 8.0 | 67.0 | 10.0 | 15.0 | 13.295 | O | 102 |
| 4605 | 7.0 | 68.0 | 10.0 | 15.0 | 12.877 | O | 102 |
| 4606 | 6.0 | 69.0 | 10.0 | 15.0 | 12.459 | O | 102 |
| 4607 | 5.0 | 70.0 | 10.0 | 15.0 | 12.041 | O | 102 |
| 4608 | 4.0 | 71.0 | 10.0 | 15.0 | 11.624 | O | 102 |
| 4609 | 3.0 | 72.0 | 10.0 | 15.0 | 11.206 | O | 102 |
| 4610 | 2.0 | 73.0 | 10.0 | 15.0 | 10.788 | O | 102 |
| 4611 | 1.0 | 74.0 | 10.0 | 15.0 | 10.370 | O | 102 |
| 4612 | 0.0 | 75.0 | 10.0 | 15.0 | 9.952 | O | 102 |
| 4613 | 24.0 | 46.0 | 15.0 | 15.0 | 19.140 | X | 102 |
| 4614 | 23.7 | 46.3 | 15.0 | 15.0 | 19.033 | X | 102 |
| 4615 | 23.6 | 46.4 | 15.0 | 15.0 | 18.998 | O | 102 |
| 4616 | 23.0 | 47.0 | 15.0 | 15.0 | 18.784 | O | 102 |
| 4617 | 20.0 | 50.0 | 15.0 | 15.0 | 17.713 | O | 102 |
| 4618 | 15.0 | 55.0 | 15.0 | 15.0 | 15.929 | O | 102 |
| 4619 | 10.0 | 60.0 | 15.0 | 15.0 | 14.145 | O | 102 |
| 4620 | 9.0 | 61.0 | 15.0 | 15.0 | 13.753 | O | 102 |
| 4621 | 8.0 | 62.0 | 15.0 | 15.0 | 13.335 | O | 102 |
| 4622 | 7.0 | 63.0 | 15.0 | 15.0 | 12.917 | O | 102 |
| 4623 | 6.0 | 64.0 | 15.0 | 15.0 | 12.500 | O | 102 |
| 4624 | 5.0 | 65.0 | 15.0 | 15.0 | 12.082 | O | 102 |
| 4625 | 4.0 | 66.0 | 15.0 | 15.0 | 11.664 | O | 102 |
| 4626 | 3.0 | 67.0 | 15.0 | 15.0 | 11.246 | O | 102 |
| 4627 | 2.0 | 68.0 | 15.0 | 15.0 | 10.828 | O | 102 |
| 4628 | 1.0 | 69.0 | 15.0 | 15.0 | 10.410 | O | 102 |
| 4629 | 0.0 | 70.0 | 15.0 | 15.0 | 9.992 | O | 102 |
| 4630 | 24.0 | 41.0 | 20.0 | 15.0 | 19.170 | X | 102 |
| 4631 | 23.6 | 41.4 | 20.0 | 15.0 | 19.028 | X | 102 |
| 4632 | 23.5 | 41.5 | 20.0 | 15.0 | 18.992 | O | 102 |
| 4633 | 23.0 | 42.0 | 20.0 | 15.0 | 18.814 | O | 102 |
| 4634 | 20.0 | 45.0 | 20.0 | 15.0 | 17.743 | O | 102 |

[Table 73]

| 4635 | 15.0 | 50.0 | 20.0 | 15.0 | 15.959 | O | 102 |
|------|------|------|------|------|--------|---|-----|
| 4636 | 10.0 | 55.0 | 20.0 | 15.0 | 14.175 | O | 102 |
| 4637 | 9.0 | 56.0 | 20.0 | 15.0 | 13.793 | O | 102 |
| 4638 | 8.0 | 57.0 | 20.0 | 15.0 | 13.376 | O | 102 |
| 4639 | 7.0 | 58.0 | 20.0 | 15.0 | 12.958 | O | 102 |
| 4640 | 6.0 | 59.0 | 20.0 | 15.0 | 12.540 | O | 102 |
| 4641 | 5.0 | 60.0 | 20.0 | 15.0 | 12.122 | O | 102 |
| 4642 | 4.0 | 61.0 | 20.0 | 15.0 | 11.704 | O | 102 |
| 4643 | 3.0 | 62.0 | 20.0 | 15.0 | 11.286 | O | 102 |
| 4644 | 2.0 | 63.0 | 20.0 | 15.0 | 10.868 | O | 102 |
| 4645 | 1.0 | 64.0 | 20.0 | 15.0 | 10.450 | O | 102 |
| 4646 | 0.0 | 65.0 | 20.0 | 15.0 | 10.032 | O | 102 |
| 4647 | 24.0 | 36.0 | 25.0 | 15.0 | 19.200 | X | 102 |
| 4648 | 23.5 | 36.5 | 25.0 | 15.0 | 19.022 | X | 102 |
| 4649 | 23.4 | 36.6 | 25.0 | 15.0 | 18.986 | O | 102 |
| 4650 | 23.0 | 37.0 | 25.0 | 15.0 | 18.844 | O | 102 |
| 4651 | 20.0 | 40.0 | 25.0 | 15.0 | 17.773 | O | 102 |
| 4652 | 15.0 | 45.0 | 25.0 | 15.0 | 15.989 | O | 102 |
| 4653 | 10.0 | 50.0 | 25.0 | 15.0 | 14.205 | O | 102 |
| 4654 | 9.0 | 51.0 | 25.0 | 15.0 | 13.834 | O | 102 |
| 4655 | 8.0 | 52.0 | 25.0 | 15.0 | 13.416 | O | 102 |
| 4656 | 7.0 | 53.0 | 25.0 | 15.0 | 12.998 | O | 102 |
| 4657 | 6.0 | 54.0 | 25.0 | 15.0 | 12.580 | O | 102 |
| 4658 | 5.0 | 55.0 | 25.0 | 15.0 | 12.162 | O | 102 |
| 4659 | 4.0 | 56.0 | 25.0 | 15.0 | 11.744 | O | 102 |
| 4660 | 3.0 | 57.0 | 25.0 | 15.0 | 11.326 | O | 102 |
| 4661 | 2.0 | 58.0 | 25.0 | 15.0 | 10.908 | O | 102 |
| 4662 | 1.0 | 59.0 | 25.0 | 15.0 | 10.490 | O | 102 |
| 4663 | 0.0 | 60.0 | 25.0 | 15.0 | 10.072 | O | 102 |
| 4664 | 24.0 | 31.0 | 30.0 | 15.0 | 19.230 | X | 102 |
| 4665 | 23.4 | 31.6 | 30.0 | 15.0 | 19.016 | X | 102 |
| 4666 | 23.3 | 31.7 | 30.0 | 15.0 | 18.981 | O | 102 |
| 4667 | 23.0 | 32.0 | 30.0 | 15.0 | 18.874 | O | 102 |
| 4668 | 20.0 | 35.0 | 30.0 | 15.0 | 17.803 | O | 102 |
| 4669 | 15.0 | 40.0 | 30.0 | 15.0 | 16.019 | O | 102 |
| 4670 | 10.0 | 45.0 | 30.0 | 15.0 | 14.235 | O | 102 |
| 4671 | 9.0 | 46.0 | 30.0 | 15.0 | 13.874 | O | 102 |
| 4672 | 8.0 | 47.0 | 30.0 | 15.0 | 13.456 | O | 102 |
| 4673 | 7.0 | 48.0 | 30.0 | 15.0 | 13.038 | O | 102 |
| 4674 | 6.0 | 49.0 | 30.0 | 15.0 | 12.620 | O | 102 |
| 4675 | 5.0 | 50.0 | 30.0 | 15.0 | 12.202 | O | 102 |
| 4676 | 4.0 | 51.0 | 30.0 | 15.0 | 11.784 | O | 102 |
| 4677 | 3.0 | 52.0 | 30.0 | 15.0 | 11.366 | O | 102 |
| 4678 | 2.0 | 53.0 | 30.0 | 15.0 | 10.948 | O | 102 |
| 4679 | 1.0 | 54.0 | 30.0 | 15.0 | 10.530 | O | 102 |
| 4680 | 0.0 | 55.0 | 30.0 | 15.0 | 10.112 | O | 102 |
| 4681 | 24.0 | 26.0 | 35.0 | 15.0 | 19.260 | X | 102 |
| 4682 | 23.3 | 26.7 | 35.0 | 15.0 | 19.011 | X | 102 |
| 4683 | 23.2 | 26.8 | 35.0 | 15.0 | 18.975 | O | 102 |
| 4684 | 23.0 | 27.0 | 35.0 | 15.0 | 18.904 | O | 102 |

[Table 74]

| 4685 | 20.0 | 30.0 | 35.0 | 15.0 | 17.833 | O | 102 |
|---|---|---|---|---|---|---|---|
| 4686 | 15.0 | 35.0 | 35.0 | 15.0 | 16.049 | O | 102 |
| 4687 | 10.0 | 40.0 | 35.0 | 15.0 | 14.265 | O | 102 |
| 4688 | 9.0 | 41.0 | 35.0 | 15.0 | 13.908 | O | 102 |
| 4689 | 8.0 | 42.0 | 35.0 | 15.0 | 13.496 | O | 102 |
| 4690 | 7.0 | 43.0 | 35.0 | 15.0 | 13.078 | O | 102 |
| 4691 | 6.0 | 44.0 | 35.0 | 15.0 | 12.660 | O | 102 |
| 4692 | 5.0 | 45.0 | 35.0 | 15.0 | 12.242 | O | 102 |
| 4693 | 4.0 | 46.0 | 35.0 | 15.0 | 11.824 | O | 102 |
| 4694 | 3.0 | 47.0 | 35.0 | 15.0 | 11.406 | O | 102 |
| 4695 | 2.0 | 48.0 | 35.0 | 15.0 | 10.988 | O | 102 |
| 4696 | 1.0 | 49.0 | 35.0 | 15.0 | 10.570 | O | 102 |
| 4697 | 0.0 | 50.0 | 35.0 | 15.0 | 10.153 | O | 102 |
| 4698 | 24.0 | 21.0 | 40.0 | 15.0 | 19.290 | X | 102 |
| 4699 | 23.2 | 21.8 | 40.0 | 15.0 | 19.005 | X | 102 |
| 4700 | 23.1 | 21.9 | 40.0 | 15.0 | 18.969 | O | 102 |
| 4701 | 23.0 | 22.0 | 40.0 | 15.0 | 18.933 | O | 102 |
| 4702 | 20.0 | 25.0 | 40.0 | 15.0 | 17.863 | O | 102 |
| 4703 | 15.0 | 30.0 | 40.0 | 15.0 | 16.079 | O | 102 |
| 4704 | 10.0 | 35.0 | 40.0 | 15.0 | 14.295 | O | 102 |
| 4705 | 9.0 | 36.0 | 40.0 | 15.0 | 13.938 | O | 102 |
| 4706 | 8.0 | 37.0 | 40.0 | 15.0 | 13.536 | O | 102 |
| 4707 | 7.0 | 38.0 | 40.0 | 15.0 | 13.118 | O | 102 |
| 4708 | 6.0 | 39.0 | 40.0 | 15.0 | 12.700 | O | 102 |
| 4709 | 5.0 | 40.0 | 40.0 | 15.0 | 12.282 | O | 102 |
| 4710 | 4.0 | 41.0 | 40.0 | 15.0 | 11.864 | O | 102 |
| 4711 | 3.0 | 42.0 | 40.0 | 15.0 | 11.446 | O | 102 |
| 4712 | 2.0 | 43.0 | 40.0 | 15.0 | 11.029 | O | 102 |
| 4713 | 1.0 | 44.0 | 40.0 | 15.0 | 10.611 | O | 102 |
| 4714 | 0.0 | 45.0 | 40.0 | 15.0 | 10.193 | O | 102 |
| 4715 | 24.0 | 16.0 | 45.0 | 15.0 | 19.320 | X | 102 |
| 4716 | 23.2 | 16.8 | 45.0 | 15.0 | 19.035 | X | 102 |
| 4717 | 23.1 | 16.9 | 45.0 | 15.0 | 18.999 | O | 102 |
| 4718 | 23.0 | 17.0 | 45.0 | 15.0 | 18.963 | O | 102 |
| 4719 | 20.0 | 20.0 | 45.0 | 15.0 | 17.893 | O | 102 |
| 4720 | 15.0 | 25.0 | 45.0 | 15.0 | 16.109 | O | 102 |
| 4721 | 10.0 | 30.0 | 45.0 | 15.0 | 14.325 | O | 102 |
| 4722 | 9.0 | 31.0 | 45.0 | 15.0 | 13.968 | O | 102 |
| 4723 | 8.0 | 32.0 | 45.0 | 15.0 | 13.576 | O | 102 |
| 4724 | 7.0 | 33.0 | 45.0 | 15.0 | 13.158 | O | 102 |
| 4725 | 6.0 | 34.0 | 45.0 | 15.0 | 12.740 | O | 102 |
| 4726 | 5.0 | 35.0 | 45.0 | 15.0 | 12.322 | O | 102 |
| 4727 | 4.0 | 36.0 | 45.0 | 15.0 | 11.905 | O | 102 |
| 4728 | 3.0 | 37.0 | 45.0 | 15.0 | 11.487 | O | 102 |
| 4729 | 2.0 | 38.0 | 45.0 | 15.0 | 11.069 | O | 102 |
| 4730 | 1.0 | 39.0 | 45.0 | 15.0 | 10.651 | O | 102 |
| 4731 | 0.0 | 40.0 | 45.0 | 15.0 | 10.233 | O | 102 |
| 4732 | 24.0 | 11.0 | 50.0 | 15.0 | 19.350 | X | 102 |
| 4733 | 23.1 | 11.9 | 50.0 | 15.0 | 19.029 | X | 102 |
| 4734 | 23.0 | 12.0 | 50.0 | 15.0 | 18.993 | O | 102 |

[Table 75]

| 4735 | 20.0 | 15.0 | 50.0 | 15.0 | 17.923 | O | 102 |
|---|---|---|---|---|---|---|---|
| 4736 | 15.0 | 20.0 | 50.0 | 15.0 | 16.139 | O | 102 |
| 4737 | 10.0 | 25.0 | 50.0 | 15.0 | 14.355 | O | 102 |
| 4738 | 9.0 | 26.0 | 50.0 | 15.0 | 13.998 | O | 102 |
| 4739 | 8.0 | 27.0 | 50.0 | 15.0 | 13.616 | O | 102 |
| 4740 | 7.0 | 28.0 | 50.0 | 15.0 | 13.198 | O | 102 |
| 4741 | 6.0 | 29.0 | 50.0 | 15.0 | 12.780 | O | 102 |
| 4742 | 5.0 | 30.0 | 50.0 | 15.0 | 12.363 | O | 102 |
| 4743 | 4.0 | 31.0 | 50.0 | 15.0 | 11.945 | O | 102 |
| 4744 | 3.0 | 32.0 | 50.0 | 15.0 | 11.527 | O | 102 |
| 4745 | 2.0 | 33.0 | 50.0 | 15.0 | 11.109 | O | 102 |
| 4746 | 1.0 | 34.0 | 50.0 | 15.0 | 10.691 | O | 102 |
| 4747 | 0.0 | 35.0 | 50.0 | 15.0 | 10.273 | O | 102 |
| 4748 | 23.0 | 7.0 | 55.0 | 15.0 | 19.023 | X | 102 |
| 4749 | 22.9 | 7.1 | 55.0 | 15.0 | 18.988 | O | 102 |
| 4750 | 22.0 | 8.0 | 55.0 | 15.0 | 18.667 | O | 102 |
| 4751 | 20.0 | 10.0 | 55.0 | 15.0 | 17.953 | O | 102 |
| 4752 | 15.0 | 15.0 | 55.0 | 15.0 | 16.169 | O | 102 |
| 4753 | 10.0 | 20.0 | 55.0 | 15.0 | 14.385 | O | 102 |
| 4754 | 9.0 | 21.0 | 55.0 | 15.0 | 14.028 | O | 102 |
| 4755 | 8.0 | 22.0 | 55.0 | 15.0 | 13.656 | O | 102 |
| 4756 | 7.0 | 23.0 | 55.0 | 15.0 | 13.239 | O | 102 |
| 4757 | 6.0 | 24.0 | 55.0 | 15.0 | 12.821 | O | 102 |
| 4758 | 5.0 | 25.0 | 55.0 | 15.0 | 12.403 | O | 102 |
| 4759 | 4.0 | 26.0 | 55.0 | 15.0 | 11.985 | O | 102 |
| 4760 | 3.0 | 27.0 | 55.0 | 15.0 | 11.567 | O | 102 |
| 4761 | 2.0 | 28.0 | 55.0 | 15.0 | 11.149 | O | 102 |
| 4762 | 1.0 | 29.0 | 55.0 | 15.0 | 10.731 | O | 102 |
| 4763 | 0.0 | 30.0 | 55.0 | 15.0 | 10.313 | O | 102 |
| 4764 | 23.0 | 2.0 | 60.0 | 15.0 | 19.053 | X | 102 |
| 4765 | 22.9 | 2.1 | 60.0 | 15.0 | 19.018 | X | 102 |
| 4766 | 22.8 | 2.2 | 60.0 | 15.0 | 18.982 | O | 102 |
| 4767 | 22.0 | 3.0 | 60.0 | 15.0 | 18.697 | O | 102 |
| 4768 | 20.0 | 5.0 | 60.0 | 15.0 | 17.983 | O | 102 |
| 4769 | 15.0 | 10.0 | 60.0 | 15.0 | 16.199 | O | 102 |
| 4770 | 10.0 | 15.0 | 60.0 | 15.0 | 14.415 | O | 102 |
| 4771 | 9.0 | 16.0 | 60.0 | 15.0 | 14.058 | O | 102 |
| 4772 | 8.0 | 17.0 | 60.0 | 15.0 | 13.697 | O | 102 |
| 4773 | 7.0 | 18.0 | 60.0 | 15.0 | 13.279 | O | 102 |
| 4774 | 6.0 | 19.0 | 60.0 | 15.0 | 12.861 | O | 102 |
| 4775 | 5.0 | 20.0 | 60.0 | 15.0 | 12.443 | O | 102 |
| 4776 | 4.0 | 21.0 | 60.0 | 15.0 | 12.025 | O | 102 |
| 4777 | 3.0 | 22.0 | 60.0 | 15.0 | 11.607 | O | 102 |
| 4778 | 2.0 | 23.0 | 60.0 | 15.0 | 11.189 | O | 102 |
| 4779 | 1.0 | 24.0 | 60.0 | 15.0 | 10.771 | O | 102 |
| 4780 | 0.0 | 25.0 | 60.0 | 15.0 | 10.353 | O | 102 |
| 4781 | 24.0 | 51.0 | 5.0 | 20.0 | 19.025 | X | 136 |
| 4782 | 23.9 | 51.1 | 5.0 | 20.0 | 18.990 | O | 136 |
| 4783 | 23.0 | 52.0 | 5.0 | 20.0 | 18.668 | O | 136 |
| 4784 | 20.0 | 55.0 | 5.0 | 20.0 | 17.598 | O | 136 |

[Table 76]

| | | | | | | | |
|---|---|---|---|---|---|---|---|
| 4785 | 15.0 | 60.0 | 5.0 | 20.0 | 15.814 | O | 136 |
| 4786 | 10.0 | 65.0 | 5.0 | 20.0 | 14.030 | O | 136 |
| 4787 | 9.0 | 66.0 | 5.0 | 20.0 | 13.654 | O | 136 |
| 4788 | 8.0 | 67.0 | 5.0 | 20.0 | 13.236 | O | 136 |
| 4789 | 7.0 | 68.0 | 5.0 | 20.0 | 12.818 | O | 136 |
| 4790 | 6.0 | 69.0 | 5.0 | 20.0 | 12.400 | O | 136 |
| 4791 | 5.0 | 70.0 | 5.0 | 20.0 | 11.982 | O | 136 |
| 4792 | 4.0 | 71.0 | 5.0 | 20.0 | 11.564 | O | 136 |
| 4793 | 3.0 | 72.0 | 5.0 | 20.0 | 11.146 | O | 136 |
| 4794 | 2.0 | 73.0 | 5.0 | 20.0 | 10.729 | O | 136 |
| 4795 | 1.0 | 74.0 | 5.0 | 20.0 | 10.311 | O | 136 |
| 4796 | 0.0 | 75.0 | 5.0 | 20.0 | 9.893 | O | 136 |
| 4797 | 24.0 | 46.0 | 10.0 | 20.0 | 19.055 | X | 136 |
| 4798 | 23.9 | 46.1 | 10.0 | 20.0 | 19.020 | X | 136 |
| 4799 | 23.8 | 46.2 | 10.0 | 20.0 | 18.984 | O | 136 |
| 4800 | 23.0 | 47.0 | 10.0 | 20.0 | 18.698 | O | 136 |
| 4801 | 20.0 | 50.0 | 10.0 | 20.0 | 17.628 | O | 136 |
| 4802 | 15.0 | 55.0 | 10.0 | 20.0 | 15.844 | O | 136 |
| 4803 | 10.0 | 60.0 | 10.0 | 20.0 | 14.060 | O | 136 |
| 4804 | 9.0 | 61.0 | 10.0 | 20.0 | 13.694 | O | 136 |
| 4805 | 8.0 | 62.0 | 10.0 | 20.0 | 13.276 | O | 136 |
| 4806 | 7.0 | 63.0 | 10.0 | 20.0 | 12.858 | O | 136 |
| 4807 | 6.0 | 64.0 | 10.0 | 20.0 | 12.440 | O | 136 |
| 4808 | 5.0 | 65.0 | 10.0 | 20.0 | 12.022 | O | 136 |
| 4809 | 4.0 | 66.0 | 10.0 | 20.0 | 11.605 | O | 136 |
| 4810 | 3.0 | 67.0 | 10.0 | 20.0 | 11.187 | O | 136 |
| 4811 | 2.0 | 68.0 | 10.0 | 20.0 | 10.769 | O | 136 |
| 4812 | 1.0 | 69.0 | 10.0 | 20.0 | 10.351 | O | 136 |
| 4813 | 0.0 | 70.0 | 10.0 | 20.0 | 9.933 | O | 136 |
| 4814 | 24.0 | 41.0 | 15.0 | 20.0 | 19.085 | X | 136 |
| 4815 | 23.8 | 41.2 | 15.0 | 20.0 | 19.014 | X | 136 |
| 4816 | 23.7 | 41.3 | 15.0 | 20.0 | 18.978 | O | 136 |
| 4817 | 23.0 | 42.0 | 15.0 | 20.0 | 18.728 | O | 136 |
| 4818 | 20.0 | 45.0 | 15.0 | 20.0 | 17.658 | O | 136 |
| 4819 | 15.0 | 50.0 | 15.0 | 20.0 | 15.874 | O | 136 |
| 4820 | 10.0 | 55.0 | 15.0 | 20.0 | 14.090 | O | 136 |
| 4821 | 9.0 | 56.0 | 15.0 | 20.0 | 13.733 | O | 136 |
| 4822 | 8.0 | 57.0 | 15.0 | 20.0 | 13.316 | O | 136 |
| 4823 | 7.0 | 58.0 | 15.0 | 20.0 | 12.898 | O | 136 |
| 4824 | 6.0 | 59.0 | 15.0 | 20.0 | 12.480 | O | 136 |
| 4825 | 5.0 | 60.0 | 15.0 | 20.0 | 12.063 | O | 136 |
| 4826 | 4.0 | 61.0 | 15.0 | 20.0 | 11.645 | O | 136 |
| 4827 | 3.0 | 62.0 | 15.0 | 20.0 | 11.227 | O | 136 |
| 4828 | 2.0 | 63.0 | 15.0 | 20.0 | 10.809 | O | 136 |
| 4829 | 1.0 | 64.0 | 15.0 | 20.0 | 10.391 | O | 136 |
| 4830 | 0.0 | 65.0 | 15.0 | 20.0 | 9.973 | O | 136 |
| 4831 | 24.0 | 36.0 | 20.0 | 20.0 | 19.115 | X | 136 |
| 4832 | 23.7 | 36.3 | 20.0 | 20.0 | 19.008 | X | 136 |
| 4833 | 23.6 | 36.4 | 20.0 | 20.0 | 18.972 | O | 136 |
| 4834 | 23.0 | 37.0 | 20.0 | 20.0 | 18.758 | O | 136 |

[Table 77]

| 4835 | 20.0 | 40.0 | 20.0 | 20.0 | 17.688 | O | 136 |
|------|------|------|------|------|--------|---|-----|
| 4836 | 15.0 | 45.0 | 20.0 | 20.0 | 15.904 | O | 136 |
| 4837 | 10.0 | 50.0 | 20.0 | 20.0 | 14.120 | O | 136 |
| 4838 | 9.0 | 51.0 | 20.0 | 20.0 | 13.763 | O | 136 |
| 4839 | 8.0 | 52.0 | 20.0 | 20.0 | 13.356 | O | 136 |
| 4840 | 7.0 | 53.0 | 20.0 | 20.0 | 12.939 | O | 136 |
| 4841 | 6.0 | 54.0 | 20.0 | 20.0 | 12.521 | O | 136 |
| 4842 | 5.0 | 55.0 | 20.0 | 20.0 | 12.103 | O | 136 |
| 4843 | 4.0 | 56.0 | 20.0 | 20.0 | 11.685 | O | 136 |
| 4844 | 3.0 | 57.0 | 20.0 | 20.0 | 11.267 | O | 136 |
| 4845 | 2.0 | 58.0 | 20.0 | 20.0 | 10.849 | O | 136 |
| 4846 | 1.0 | 59.0 | 20.0 | 20.0 | 10.431 | O | 136 |
| 4847 | 0.0 | 60.0 | 20.0 | 20.0 | 10.013 | O | 136 |
| 4848 | 24.0 | 31.0 | 25.0 | 20.0 | 19.145 | X | 136 |
| 4849 | 23.6 | 31.4 | 25.0 | 20.0 | 19.002 | X | 136 |
| 4850 | 23.5 | 31.5 | 25.0 | 20.0 | 18.967 | O | 136 |
| 4851 | 23.0 | 32.0 | 25.0 | 20.0 | 18.788 | O | 136 |
| 4852 | 20.0 | 35.0 | 25.0 | 20.0 | 17.718 | O | 136 |
| 4853 | 15.0 | 40.0 | 25.0 | 20.0 | 15.934 | O | 136 |
| 4854 | 10.0 | 45.0 | 25.0 | 20.0 | 14.150 | O | 136 |
| 4855 | 9.0 | 46.0 | 25.0 | 20.0 | 13.793 | O | 136 |
| 4856 | 8.0 | 47.0 | 25.0 | 20.0 | 13.397 | O | 136 |
| 4857 | 7.0 | 48.0 | 25.0 | 20.0 | 12.979 | O | 136 |
| 4858 | 6.0 | 49.0 | 25.0 | 20.0 | 12.561 | O | 136 |
| 4859 | 5.0 | 50.0 | 25.0 | 20.0 | 12.143 | O | 136 |
| 4860 | 4.0 | 51.0 | 25.0 | 20.0 | 11.725 | O | 136 |
| 4861 | 3.0 | 52.0 | 25.0 | 20.0 | 11.307 | O | 136 |
| 4862 | 2.0 | 53.0 | 25.0 | 20.0 | 10.889 | O | 136 |
| 4863 | 1.0 | 54.0 | 25.0 | 20.0 | 10.471 | O | 136 |
| 4864 | 0.0 | 55.0 | 25.0 | 20.0 | 10.053 | O | 136 |
| 4865 | 24.0 | 26.0 | 30.0 | 20.0 | 19.175 | X | 136 |
| 4866 | 23.6 | 26.4 | 30.0 | 20.0 | 19.032 | X | 136 |
| 4867 | 23.5 | 26.5 | 30.0 | 20.0 | 18.997 | O | 136 |
| 4868 | 23.0 | 27.0 | 30.0 | 20.0 | 18.818 | O | 136 |
| 4869 | 20.0 | 30.0 | 30.0 | 20.0 | 17.748 | O | 136 |
| 4870 | 15.0 | 35.0 | 30.0 | 20.0 | 15.964 | O | 136 |
| 4871 | 10.0 | 40.0 | 30.0 | 20.0 | 14.180 | O | 136 |
| 4872 | 9.0 | 41.0 | 30.0 | 20.0 | 13.823 | O | 136 |
| 4873 | 8.0 | 42.0 | 30.0 | 20.0 | 13.437 | O | 136 |
| 4874 | 7.0 | 43.0 | 30.0 | 20.0 | 13.019 | O | 136 |
| 4875 | 6.0 | 44.0 | 30.0 | 20.0 | 12.601 | O | 136 |
| 4876 | 5.0 | 45.0 | 30.0 | 20.0 | 12.183 | O | 136 |
| 4877 | 4.0 | 46.0 | 30.0 | 20.0 | 11.765 | O | 136 |
| 4878 | 3.0 | 47.0 | 30.0 | 20.0 | 11.347 | O | 136 |
| 4879 | 2.0 | 48.0 | 30.0 | 20.0 | 10.929 | O | 136 |
| 4880 | 1.0 | 49.0 | 30.0 | 20.0 | 10.511 | O | 136 |
| 4881 | 0.0 | 50.0 | 30.0 | 20.0 | 10.093 | O | 136 |
| 4882 | 24.0 | 21.0 | 35.0 | 20.0 | 19.205 | X | 136 |
| 4883 | 23.5 | 21.5 | 35.0 | 20.0 | 19.027 | X | 136 |
| 4884 | 23.4 | 21.6 | 35.0 | 20.0 | 18.991 | O | 136 |

[Table 78]

| 4885 | 23.0 | 22.0 | 35.0 | 20.0 | 18.848 | O | 136 |
|---|---|---|---|---|---|---|---|
| 4886 | 20.0 | 25.0 | 35.0 | 20.0 | 17.778 | O | 136 |
| 4887 | 15.0 | 30.0 | 35.0 | 20.0 | 15.994 | O | 136 |
| 4888 | 10.0 | 35.0 | 35.0 | 20.0 | 14.210 | O | 136 |
| 4889 | 9.0 | 36.0 | 35.0 | 20.0 | 13.853 | O | 136 |
| 4890 | 8.0 | 37.0 | 35.0 | 20.0 | 13.477 | O | 136 |
| 4891 | 7.0 | 38.0 | 35.0 | 20.0 | 13.059 | O | 136 |
| 4892 | 6.0 | 39.0 | 35.0 | 20.0 | 12.641 | O | 136 |
| 4893 | 5.0 | 40.0 | 35.0 | 20.0 | 12.223 | O | 136 |
| 4894 | 4.0 | 41.0 | 35.0 | 20.0 | 11.805 | O | 136 |
| 4895 | 3.0 | 42.0 | 35.0 | 20.0 | 11.387 | O | 136 |
| 4896 | 2.0 | 43.0 | 35.0 | 20.0 | 10.969 | O | 136 |
| 4897 | 1.0 | 44.0 | 35.0 | 20.0 | 10.551 | O | 136 |
| 4898 | 0.0 | 45.0 | 35.0 | 20.0 | 10.134 | O | 136 |
| 4899 | 24.0 | 16.0 | 40.0 | 20.0 | 19.235 | X | 136 |
| 4900 | 23.4 | 16.6 | 40.0 | 20.0 | 19.021 | X | 136 |
| 4901 | 23.3 | 16.7 | 40.0 | 20.0 | 18.985 | O | 136 |
| 4902 | 23.0 | 17.0 | 40.0 | 20.0 | 18.878 | O | 136 |
| 4903 | 20.0 | 20.0 | 40.0 | 20.0 | 17.808 | O | 136 |
| 4904 | 15.0 | 25.0 | 40.0 | 20.0 | 16.024 | O | 136 |
| 4905 | 10.0 | 30.0 | 40.0 | 20.0 | 14.240 | O | 136 |
| 4906 | 9.0 | 31.0 | 40.0 | 20.0 | 13.883 | O | 136 |
| 4907 | 8.0 | 32.0 | 40.0 | 20.0 | 13.517 | O | 136 |
| 4908 | 7.0 | 33.0 | 40.0 | 20.0 | 13.099 | O | 136 |
| 4909 | 6.0 | 34.0 | 40.0 | 20.0 | 12.681 | O | 136 |
| 4910 | 5.0 | 35.0 | 40.0 | 20.0 | 12.263 | O | 136 |
| 4911 | 4.0 | 36.0 | 40.0 | 20.0 | 11.845 | O | 136 |
| 4912 | 3.0 | 37.0 | 40.0 | 20.0 | 11.427 | O | 136 |
| 4913 | 2.0 | 38.0 | 40.0 | 20.0 | 11.009 | O | 136 |
| 4914 | 1.0 | 39.0 | 40.0 | 20.0 | 10.592 | O | 136 |
| 4915 | 0.0 | 40.0 | 40.0 | 20.0 | 10.174 | O | 136 |
| 4916 | 24.0 | 11.0 | 45.0 | 20.0 | 19.265 | X | 136 |
| 4917 | 23.3 | 11.7 | 45.0 | 20.0 | 19.015 | X | 136 |
| 4918 | 23.2 | 11.8 | 45.0 | 20.0 | 18.980 | O | 136 |
| 4919 | 23.0 | 12.0 | 45.0 | 20.0 | 18.908 | O | 136 |
| 4920 | 20.0 | 15.0 | 45.0 | 20.0 | 17.838 | O | 136 |
| 4921 | 15.0 | 20.0 | 45.0 | 20.0 | 16.054 | O | 136 |
| 4922 | 10.0 | 25.0 | 45.0 | 20.0 | 14.270 | O | 136 |
| 4923 | 9.0 | 26.0 | 45.0 | 20.0 | 13.913 | O | 136 |
| 4924 | 8.0 | 27.0 | 45.0 | 20.0 | 13.556 | O | 136 |
| 4925 | 7.0 | 28.0 | 45.0 | 20.0 | 13.139 | O | 136 |
| 4926 | 6.0 | 29.0 | 45.0 | 20.0 | 12.721 | O | 136 |
| 4927 | 5.0 | 30.0 | 45.0 | 20.0 | 12.303 | O | 136 |
| 4928 | 4.0 | 31.0 | 45.0 | 20.0 | 11.885 | O | 136 |
| 4929 | 3.0 | 32.0 | 45.0 | 20.0 | 11.468 | O | 136 |
| 4930 | 2.0 | 33.0 | 45.0 | 20.0 | 11.050 | O | 136 |
| 4931 | 1.0 | 34.0 | 45.0 | 20.0 | 10.632 | O | 136 |
| 4932 | 0.0 | 35.0 | 45.0 | 20.0 | 10.214 | O | 136 |
| 4933 | 24.0 | 6.0 | 50.0 | 20.0 | 19.295 | X | 136 |
| 4934 | 23.2 | 6.8 | 50.0 | 20.0 | 19.010 | X | 136 |

[Table 79]

| 4935 | 23.1 | 6.9 | 50.0 | 20.0 | 18.974 | O | 136 |
|---|---|---|---|---|---|---|---|
| 4936 | 23.0 | 7.0 | 50.0 | 20.0 | 18.938 | O | 136 |
| 4937 | 20.0 | 10.0 | 50.0 | 20.0 | 17.868 | O | 136 |
| 4938 | 15.0 | 15.0 | 50.0 | 20.0 | 16.084 | O | 136 |
| 4939 | 10.0 | 20.0 | 50.0 | 20.0 | 14.300 | O | 136 |
| 4940 | 9.0 | 21.0 | 50.0 | 20.0 | 13.943 | O | 136 |
| 4941 | 8.0 | 22.0 | 50.0 | 20.0 | 13.586 | O | 136 |
| 4942 | 7.0 | 23.0 | 50.0 | 20.0 | 13.179 | O | 136 |
| 4943 | 6.0 | 24.0 | 50.0 | 20.0 | 12.761 | O | 136 |
| 4944 | 5.0 | 25.0 | 50.0 | 20.0 | 12.344 | O | 136 |
| 4945 | 4.0 | 26.0 | 50.0 | 20.0 | 11.926 | O | 136 |
| 4946 | 3.0 | 27.0 | 50.0 | 20.0 | 11.508 | O | 136 |
| 4947 | 2.0 | 28.0 | 50.0 | 20.0 | 11.090 | O | 136 |
| 4948 | 1.0 | 29.0 | 50.0 | 20.0 | 10.672 | O | 136 |
| 4949 | 0.0 | 30.0 | 50.0 | 20.0 | 10.254 | O | 136 |
| 4950 | 24.0 | 1.0 | 55.0 | 20.0 | 19.325 | X | 136 |
| 4951 | 23.1 | 1.9 | 55.0 | 20.0 | 19.004 | X | 136 |
| 4952 | 23.0 | 2.0 | 55.0 | 20.0 | 18.968 | O | 136 |
| 4953 | 20.0 | 5.0 | 55.0 | 20.0 | 17.898 | O | 136 |
| 4954 | 15.0 | 10.0 | 55.0 | 20.0 | 16.114 | O | 136 |
| 4955 | 10.0 | 15.0 | 55.0 | 20.0 | 14.330 | O | 136 |
| 4956 | 9.0 | 16.0 | 55.0 | 20.0 | 13.973 | O | 136 |
| 4957 | 8.0 | 17.0 | 55.0 | 20.0 | 13.616 | O | 136 |
| 4958 | 7.0 | 18.0 | 55.0 | 20.0 | 13.219 | O | 136 |
| 4959 | 6.0 | 19.0 | 55.0 | 20.0 | 12.802 | O | 136 |
| 4960 | 5.0 | 20.0 | 55.0 | 20.0 | 12.384 | O | 136 |
| 4961 | 4.0 | 21.0 | 55.0 | 20.0 | 11.966 | O | 136 |
| 4962 | 3.0 | 22.0 | 55.0 | 20.0 | 11.548 | O | 136 |
| 4963 | 2.0 | 23.0 | 55.0 | 20.0 | 11.130 | O | 136 |
| 4964 | 1.0 | 24.0 | 55.0 | 20.0 | 10.712 | O | 136 |
| 4965 | 0.0 | 25.0 | 55.0 | 20.0 | 10.294 | O | 136 |
| 4966 | 24.0 | 49.0 | 5.0 | 22.0 | 19.003 | X | 150 |
| 4967 | 23.9 | 49.1 | 5.0 | 22.0 | 18.967 | O | 150 |
| 4968 | 23.0 | 50.0 | 5.0 | 22.0 | 18.646 | O | 150 |
| 4969 | 20.0 | 53.0 | 5.0 | 22.0 | 17.576 | O | 150 |
| 4970 | 15.0 | 58.0 | 5.0 | 22.0 | 15.792 | O | 150 |
| 4971 | 10.0 | 63.0 | 5.0 | 22.0 | 14.008 | O | 150 |
| 4972 | 9.0 | 64.0 | 5.0 | 22.0 | 13.646 | O | 150 |
| 4973 | 8.0 | 65.0 | 5.0 | 22.0 | 13.228 | O | 150 |
| 4974 | 7.0 | 66.0 | 5.0 | 22.0 | 12.811 | O | 150 |
| 4975 | 6.0 | 67.0 | 5.0 | 22.0 | 12.393 | O | 150 |
| 4976 | 5.0 | 68.0 | 5.0 | 22.0 | 11.975 | O | 150 |
| 4977 | 4.0 | 69.0 | 5.0 | 22.0 | 11.557 | O | 150 |
| 4978 | 3.0 | 70.0 | 5.0 | 22.0 | 11.139 | O | 150 |
| 4979 | 2.0 | 71.0 | 5.0 | 22.0 | 10.721 | O | 150 |
| 4980 | 1.0 | 72.0 | 5.0 | 22.0 | 10.303 | O | 150 |
| 4981 | 0.0 | 73.0 | 5.0 | 22.0 | 9.885 | O | 150 |
| 4982 | 24.0 | 44.0 | 10.0 | 22.0 | 19.033 | X | 150 |
| 4983 | 23.9 | 44.1 | 10.0 | 22.0 | 18.997 | O | 150 |
| 4984 | 23.0 | 45.0 | 10.0 | 22.0 | 18.676 | O | 150 |

[Table 80]

| 4985 | 20.0 | 48.0 | 10.0 | 22.0 | 17.606 | O | 150 |
|---|---|---|---|---|---|---|---|
| 4986 | 15.0 | 53.0 | 10.0 | 22.0 | 15.822 | O | 150 |
| 4987 | 10.0 | 58.0 | 10.0 | 22.0 | 14.038 | O | 150 |
| 4988 | 9.0 | 59.0 | 10.0 | 22.0 | 13.681 | O | 150 |
| 4989 | 8.0 | 60.0 | 10.0 | 22.0 | 13.269 | O | 150 |
| 4990 | 7.0 | 61.0 | 10.0 | 22.0 | 12.851 | O | 150 |
| 4991 | 6.0 | 62.0 | 10.0 | 22.0 | 12.433 | O | 150 |
| 4992 | 5.0 | 63.0 | 10.0 | 22.0 | 12.015 | O | 150 |
| 4993 | 4.0 | 64.0 | 10.0 | 22.0 | 11.597 | O | 150 |
| 4994 | 3.0 | 65.0 | 10.0 | 22.0 | 11.179 | O | 150 |
| 4995 | 2.0 | 66.0 | 10.0 | 22.0 | 10.761 | O | 150 |
| 4996 | 1.0 | 67.0 | 10.0 | 22.0 | 10.343 | O | 150 |
| 4997 | 0.0 | 68.0 | 10.0 | 22.0 | 9.925 | O | 150 |
| 4998 | 24.0 | 39.0 | 15.0 | 22.0 | 19.063 | X | 150 |
| 4999 | 23.9 | 39.1 | 15.0 | 22.0 | 19.027 | X | 150 |
| 5000 | 23.8 | 39.2 | 15.0 | 22.0 | 18.992 | O | 150 |
| 5001 | 23.0 | 40.0 | 15.0 | 22.0 | 18.706 | O | 150 |
| 5002 | 20.0 | 43.0 | 15.0 | 22.0 | 17.636 | O | 150 |
| 5003 | 15.0 | 48.0 | 15.0 | 22.0 | 15.852 | O | 150 |
| 5004 | 10.0 | 53.0 | 15.0 | 22.0 | 14.068 | O | 150 |
| 5005 | 9.0 | 54.0 | 15.0 | 22.0 | 13.711 | O | 150 |
| 5006 | 8.0 | 55.0 | 15.0 | 22.0 | 13.309 | O | 150 |
| 5007 | 7.0 | 56.0 | 15.0 | 22.0 | 12.891 | O | 150 |
| 5008 | 6.0 | 57.0 | 15.0 | 22.0 | 12.473 | O | 150 |
| 5009 | 5.0 | 58.0 | 15.0 | 22.0 | 12.055 | O | 150 |
| 5010 | 4.0 | 59.0 | 15.0 | 22.0 | 11.637 | O | 150 |
| 5011 | 3.0 | 60.0 | 15.0 | 22.0 | 11.219 | O | 150 |
| 5012 | 2.0 | 61.0 | 15.0 | 22.0 | 10.801 | O | 150 |
| 5013 | 1.0 | 62.0 | 15.0 | 22.0 | 10.383 | O | 150 |
| 5014 | 0.0 | 63.0 | 15.0 | 22.0 | 9.965 | O | 150 |
| 5015 | 24.0 | 34.0 | 20.0 | 22.0 | 19.093 | X | 150 |
| 5016 | 23.8 | 34.2 | 20.0 | 22.0 | 19.022 | X | 150 |
| 5017 | 23.7 | 34.3 | 20.0 | 22.0 | 18.986 | O | 150 |
| 5018 | 23.0 | 35.0 | 20.0 | 22.0 | 18.736 | O | 150 |
| 5019 | 20.0 | 38.0 | 20.0 | 22.0 | 17.666 | O | 150 |
| 5020 | 15.0 | 43.0 | 20.0 | 22.0 | 15.882 | O | 150 |
| 5021 | 10.0 | 48.0 | 20.0 | 22.0 | 14.098 | O | 150 |
| 5022 | 9.0 | 49.0 | 20.0 | 22.0 | 13.741 | O | 150 |
| 5023 | 8.0 | 50.0 | 20.0 | 22.0 | 13.349 | O | 150 |
| 5024 | 7.0 | 51.0 | 20.0 | 22.0 | 12.931 | O | 150 |
| 5025 | 6.0 | 52.0 | 20.0 | 22.0 | 12.513 | O | 150 |
| 5026 | 5.0 | 53.0 | 20.0 | 22.0 | 12.095 | O | 150 |
| 5027 | 4.0 | 54.0 | 20.0 | 22.0 | 11.677 | O | 150 |
| 5028 | 3.0 | 55.0 | 20.0 | 22.0 | 11.259 | O | 150 |
| 5029 | 2.0 | 56.0 | 20.0 | 22.0 | 10.841 | O | 150 |
| 5030 | 1.0 | 57.0 | 20.0 | 22.0 | 10.423 | O | 150 |
| 5031 | 0.0 | 58.0 | 20.0 | 22.0 | 10.006 | O | 150 |
| 5032 | 24.0 | 29.0 | 25.0 | 22.0 | 19.123 | X | 150 |
| 5033 | 23.7 | 29.3 | 25.0 | 22.0 | 19.016 | X | 150 |
| 5034 | 23.6 | 29.4 | 25.0 | 22.0 | 18.980 | O | 150 |

[Table 81]

| 5035 | 23.0 | 30.0 | 25.0 | 22.0 | 18.766 | O | 150 |
|------|------|------|------|------|--------|---|-----|
| 5036 | 20.0 | 33.0 | 25.0 | 22.0 | 17.696 | O | 150 |
| 5037 | 15.0 | 38.0 | 25.0 | 22.0 | 15.912 | O | 150 |
| 5038 | 10.0 | 43.0 | 25.0 | 22.0 | 14.128 | O | 150 |
| 5039 | 9.0 | 44.0 | 25.0 | 22.0 | 13.771 | O | 150 |
| 5040 | 8.0 | 45.0 | 25.0 | 22.0 | 13.389 | O | 150 |
| 5041 | 7.0 | 46.0 | 25.0 | 22.0 | 12.971 | O | 150 |
| 5042 | 6.0 | 47.0 | 25.0 | 22.0 | 12.553 | O | 150 |
| 5043 | 5.0 | 48.0 | 25.0 | 22.0 | 12.135 | O | 150 |
| 5044 | 4.0 | 49.0 | 25.0 | 22.0 | 11.717 | O | 150 |
| 5045 | 3.0 | 50.0 | 25.0 | 22.0 | 11.299 | O | 150 |
| 5046 | 2.0 | 51.0 | 25.0 | 22.0 | 10.881 | O | 150 |
| 5047 | 1.0 | 52.0 | 25.0 | 22.0 | 10.464 | O | 150 |
| 5048 | 0.0 | 53.0 | 25.0 | 22.0 | 10.046 | O | 150 |
| 5049 | 24.0 | 24.0 | 30.0 | 22.0 | 19.153 | X | 150 |
| 5050 | 23.6 | 24.4 | 30.0 | 22.0 | 19.010 | X | 150 |
| 5051 | 23.5 | 24.5 | 30.0 | 22.0 | 18.975 | O | 150 |
| 5052 | 23.0 | 25.0 | 30.0 | 22.0 | 18.796 | O | 150 |
| 5053 | 20.0 | 28.0 | 30.0 | 22.0 | 17.726 | O | 150 |
| 5054 | 15.0 | 33.0 | 30.0 | 22.0 | 15.942 | O | 150 |
| 5055 | 10.0 | 38.0 | 30.0 | 22.0 | 14.158 | O | 150 |
| 5056 | 9.0 | 39.0 | 30.0 | 22.0 | 13.801 | O | 150 |
| 5057 | 8.0 | 40.0 | 30.0 | 22.0 | 13.429 | O | 150 |
| 5058 | 7.0 | 41.0 | 30.0 | 22.0 | 13.011 | O | 150 |
| 5059 | 6.0 | 42.0 | 30.0 | 22.0 | 12.593 | O | 150 |
| 5060 | 5.0 | 43.0 | 30.0 | 22.0 | 12.175 | O | 150 |
| 5061 | 4.0 | 44.0 | 30.0 | 22.0 | 11.757 | O | 150 |
| 5062 | 3.0 | 45.0 | 30.0 | 22.0 | 11.340 | O | 150 |
| 5063 | 2.0 | 46.0 | 30.0 | 22.0 | 10.922 | O | 150 |
| 5064 | 1.0 | 47.0 | 30.0 | 22.0 | 10.504 | O | 150 |
| 5065 | 0.0 | 48.0 | 30.0 | 22.0 | 10.086 | O | 150 |
| 5066 | 24.0 | 19.0 | 35.0 | 22.0 | 19.183 | X | 150 |
| 5067 | 23.5 | 19.5 | 35.0 | 22.0 | 19.005 | X | 150 |
| 5068 | 23.4 | 19.6 | 35.0 | 22.0 | 18.969 | O | 150 |
| 5069 | 23.0 | 20.0 | 35.0 | 22.0 | 18.826 | O | 150 |
| 5070 | 20.0 | 23.0 | 35.0 | 22.0 | 17.756 | O | 150 |
| 5071 | 15.0 | 28.0 | 35.0 | 22.0 | 15.972 | O | 150 |
| 5072 | 10.0 | 33.0 | 35.0 | 22.0 | 14.188 | O | 150 |
| 5073 | 9.0 | 34.0 | 35.0 | 22.0 | 13.831 | O | 150 |
| 5074 | 8.0 | 35.0 | 35.0 | 22.0 | 13.469 | O | 150 |
| 5075 | 7.0 | 36.0 | 35.0 | 22.0 | 13.051 | O | 150 |
| 5076 | 6.0 | 37.0 | 35.0 | 22.0 | 12.633 | O | 150 |
| 5077 | 5.0 | 38.0 | 35.0 | 22.0 | 12.215 | O | 150 |
| 5078 | 4.0 | 39.0 | 35.0 | 22.0 | 11.798 | O | 150 |
| 5079 | 3.0 | 40.0 | 35.0 | 22.0 | 11.380 | O | 150 |
| 5080 | 2.0 | 41.0 | 35.0 | 22.0 | 10.962 | O | 150 |
| 5081 | 1.0 | 42.0 | 35.0 | 22.0 | 10.544 | O | 150 |
| 5082 | 0.0 | 43.0 | 35.0 | 22.0 | 10.126 | O | 150 |
| 5083 | 24.0 | 14.0 | 40.0 | 22.0 | 19.213 | X | 150 |
| 5084 | 23.5 | 14.5 | 40.0 | 22.0 | 19.035 | X | 150 |

[Table 82]

| 5085 | 23.4 | 14.6 | 40.0 | 22.0 | 18.999 | O | 150 |
|------|------|------|------|------|--------|---|-----|
| 5086 | 23.0 | 15.0 | 40.0 | 22.0 | 18.856 | O | 150 |
| 5087 | 20.0 | 18.0 | 40.0 | 22.0 | 17.786 | O | 150 |
| 5088 | 15.0 | 23.0 | 40.0 | 22.0 | 16.002 | O | 150 |
| 5089 | 10.0 | 28.0 | 40.0 | 22.0 | 14.218 | O | 150 |
| 5090 | 9.0 | 29.0 | 40.0 | 22.0 | 13.861 | O | 150 |
| 5091 | 8.0 | 30.0 | 40.0 | 22.0 | 13.504 | O | 150 |
| 5092 | 7.0 | 31.0 | 40.0 | 22.0 | 13.091 | O | 150 |
| 5093 | 6.0 | 32.0 | 40.0 | 22.0 | 12.674 | O | 150 |
| 5094 | 5.0 | 33.0 | 40.0 | 22.0 | 12.256 | O | 150 |
| 5095 | 4.0 | 34.0 | 40.0 | 22.0 | 11.838 | O | 150 |
| 5096 | 3.0 | 35.0 | 40.0 | 22.0 | 11.420 | O | 150 |
| 5097 | 2.0 | 36.0 | 40.0 | 22.0 | 11.002 | O | 150 |
| 5098 | 1.0 | 37.0 | 40.0 | 22.0 | 10.584 | O | 150 |
| 5099 | 0.0 | 38.0 | 40.0 | 22.0 | 10.166 | O | 150 |
| 5100 | 24.0 | 9.0 | 45.0 | 22.0 | 19.243 | X | 150 |
| 5101 | 23.4 | 9.6 | 45.0 | 22.0 | 19.029 | X | 150 |
| 5102 | 23.3 | 9.7 | 45.0 | 22.0 | 18.993 | O | 150 |
| 5103 | 23.0 | 10.0 | 45.0 | 22.0 | 18.886 | O | 150 |
| 5104 | 20.0 | 13.0 | 45.0 | 22.0 | 17.816 | O | 150 |
| 5105 | 15.0 | 18.0 | 45.0 | 22.0 | 16.032 | O | 150 |
| 5106 | 10.0 | 23.0 | 45.0 | 22.0 | 14.248 | O | 150 |
| 5107 | 9.0 | 24.0 | 45.0 | 22.0 | 13.891 | O | 150 |
| 5108 | 8.0 | 25.0 | 45.0 | 22.0 | 13.534 | O | 150 |
| 5109 | 7.0 | 26.0 | 45.0 | 22.0 | 13.132 | O | 150 |
| 5110 | 6.0 | 27.0 | 45.0 | 22.0 | 12.714 | O | 150 |
| 5111 | 5.0 | 28.0 | 45.0 | 22.0 | 12.296 | O | 150 |
| 5112 | 4.0 | 29.0 | 45.0 | 22.0 | 11.878 | O | 150 |
| 5113 | 3.0 | 30.0 | 45.0 | 22.0 | 11.460 | O | 150 |
| 5114 | 2.0 | 31.0 | 45.0 | 22.0 | 11.042 | O | 150 |
| 5115 | 1.0 | 32.0 | 45.0 | 22.0 | 10.624 | O | 150 |
| 5116 | 0.0 | 33.0 | 45.0 | 22.0 | 10.206 | O | 150 |
| 5117 | 24.0 | 4.0 | 50.0 | 22.0 | 19.273 | X | 150 |
| 5118 | 23.3 | 4.7 | 50.0 | 22.0 | 19.023 | X | 150 |
| 5119 | 23.2 | 4.8 | 50.0 | 22.0 | 18.987 | O | 150 |
| 5120 | 23.0 | 5.0 | 50.0 | 22.0 | 18.916 | O | 150 |
| 5121 | 20.0 | 8.0 | 50.0 | 22.0 | 17.846 | O | 150 |
| 5122 | 15.0 | 13.0 | 50.0 | 22.0 | 16.062 | O | 150 |
| 5123 | 10.0 | 18.0 | 50.0 | 22.0 | 14.277 | O | 150 |
| 5124 | 9.0 | 19.0 | 50.0 | 22.0 | 13.921 | O | 150 |
| 5125 | 8.0 | 20.0 | 50.0 | 22.0 | 13.564 | O | 150 |
| 5126 | 7.0 | 21.0 | 50.0 | 22.0 | 13.172 | O | 150 |
| 5127 | 6.0 | 22.0 | 50.0 | 22.0 | 12.754 | O | 150 |
| 5128 | 5.0 | 23.0 | 50.0 | 22.0 | 12.336 | O | 150 |
| 5129 | 4.0 | 24.0 | 50.0 | 22.0 | 11.918 | O | 150 |
| 5130 | 3.0 | 25.0 | 50.0 | 22.0 | 11.500 | O | 150 |
| 5131 | 2.0 | 26.0 | 50.0 | 22.0 | 11.082 | O | 150 |
| 5132 | 1.0 | 27.0 | 50.0 | 22.0 | 10.664 | O | 150 |
| 5133 | 0.0 | 28.0 | 50.0 | 22.0 | 10.246 | O | 150 |

Tables 83 to 103 show the composition, combustion heat amount, and GWP of the working medium of a four-component system of propane, HFO-1123, HFO-1234yf, and $CO_2$.

[Table 83]

| Case | propane | HFO-1123 | HFO-1234yf | $CO_2$ | Heat of Combustion | Evaluation | GWP |
|------|---------|----------|------------|--------|--------------------|------------|-----|
| 5134 | 24.0 | 69.0 | 5.0 | 2.0 | 19.033 | X | 1 |
| 5135 | 23.9 | 69.1 | 5.0 | 2.0 | 18.998 | O | 1 |
| 5136 | 23.0 | 70.0 | 5.0 | 2.0 | 18.676 | O | 1 |
| 5137 | 20.0 | 73.0 | 5.0 | 2.0 | 17.606 | O | 1 |
| 5138 | 15.0 | 78.0 | 5.0 | 2.0 | 15.822 | O | 1 |
| 5139 | 10.0 | 83.0 | 5.0 | 2.0 | 13.950 | O | 1 |
| 5140 | 9.0 | 84.0 | 5.0 | 2.0 | 13.532 | O | 1 |
| 5141 | 8.0 | 85.0 | 5.0 | 2.0 | 13.114 | O | 1 |
| 5142 | 7.0 | 86.0 | 5.0 | 2.0 | 12.696 | O | 1 |
| 5143 | 6.0 | 87.0 | 5.0 | 2.0 | 12.278 | O | 1 |
| 5144 | 5.0 | 88.0 | 5.0 | 2.0 | 11.860 | O | 1 |
| 5145 | 4.0 | 89.0 | 5.0 | 2.0 | 11.442 | O | 1 |
| 5146 | 3.0 | 90.0 | 5.0 | 2.0 | 11.024 | O | 1 |
| 5147 | 2.0 | 91.0 | 5.0 | 2.0 | 10.606 | O | 1 |
| 5148 | 1.0 | 92.0 | 5.0 | 2.0 | 10.188 | O | 1 |
| 5149 | 0.0 | 93.0 | 5.0 | 2.0 | 9.770 | O | 1 |
| 5150 | 24.0 | 64.0 | 10.0 | 2.0 | 19.063 | X | 1 |
| 5151 | 23.9 | 64.1 | 10.0 | 2.0 | 19.027 | X | 1 |
| 5152 | 23.8 | 64.2 | 10.0 | 2.0 | 18.992 | O | 1 |
| 5153 | 23.0 | 65.0 | 10.0 | 2.0 | 18.706 | O | 1 |
| 5154 | 20.0 | 68.0 | 10.0 | 2.0 | 17.636 | O | 1 |
| 5155 | 15.0 | 73.0 | 10.0 | 2.0 | 15.852 | O | 1 |
| 5156 | 10.0 | 78.0 | 10.0 | 2.0 | 13.990 | O | 1 |
| 5157 | 9.0 | 79.0 | 10.0 | 2.0 | 13.572 | O | 1 |
| 5158 | 8.0 | 80.0 | 10.0 | 2.0 | 13.154 | O | 1 |
| 5159 | 7.0 | 81.0 | 10.0 | 2.0 | 12.736 | O | 1 |
| 5160 | 6.0 | 82.0 | 10.0 | 2.0 | 12.318 | O | 1 |
| 5161 | 5.0 | 83.0 | 10.0 | 2.0 | 11.900 | O | 1 |
| 5162 | 4.0 | 84.0 | 10.0 | 2.0 | 11.482 | O | 1 |
| 5163 | 3.0 | 85.0 | 10.0 | 2.0 | 11.064 | O | 1 |
| 5164 | 2.0 | 86.0 | 10.0 | 2.0 | 10.646 | O | 1 |
| 5165 | 1.0 | 87.0 | 10.0 | 2.0 | 10.228 | O | 1 |
| 5166 | 0.0 | 88.0 | 10.0 | 2.0 | 9.810 | O | 1 |
| 5167 | 24.0 | 59.0 | 15.0 | 2.0 | 19.093 | X | 1 |
| 5168 | 23.8 | 59.2 | 15.0 | 2.0 | 19.022 | X | 1 |
| 5169 | 23.7 | 59.3 | 15.0 | 2.0 | 18.986 | O | 1 |
| 5170 | 23.0 | 60.0 | 15.0 | 2.0 | 18.736 | O | 1 |
| 5171 | 20.0 | 63.0 | 15.0 | 2.0 | 17.666 | O | 1 |
| 5172 | 15.0 | 68.0 | 15.0 | 2.0 | 15.882 | O | 1 |
| 5173 | 10.0 | 73.0 | 15.0 | 2.0 | 14.030 | O | 1 |
| 5174 | 9.0 | 74.0 | 15.0 | 2.0 | 13.612 | O | 1 |
| 5175 | 8.0 | 75.0 | 15.0 | 2.0 | 13.194 | O | 1 |
| 5176 | 7.0 | 76.0 | 15.0 | 2.0 | 12.776 | O | 1 |
| 5177 | 6.0 | 77.0 | 15.0 | 2.0 | 12.358 | O | 1 |
| 5178 | 5.0 | 78.0 | 15.0 | 2.0 | 11.940 | O | 1 |
| 5179 | 4.0 | 79.0 | 15.0 | 2.0 | 11.522 | O | 1 |
| 5180 | 3.0 | 80.0 | 15.0 | 2.0 | 11.104 | O | 1 |
| 5181 | 2.0 | 81.0 | 15.0 | 2.0 | 10.686 | O | 1 |
| 5182 | 1.0 | 82.0 | 15.0 | 2.0 | 10.269 | O | 1 |
| 5183 | 0.0 | 83.0 | 15.0 | 2.0 | 9.851 | O | 1 |

[Table 84]

| 5184 | 24.0 | 54.0 | 20.0 | 2.0 | 19.123 | X | 1 |
|------|------|------|------|-----|--------|---|---|
| 5185 | 23.7 | 54.3 | 20.0 | 2.0 | 19.016 | X | 1 |
| 5186 | 23.6 | 54.4 | 20.0 | 2.0 | 18.980 | O | 1 |
| 5187 | 23.0 | 55.0 | 20.0 | 2.0 | 18.766 | O | 1 |
| 5188 | 20.0 | 58.0 | 20.0 | 2.0 | 17.696 | O | 1 |
| 5189 | 10.0 | 68.0 | 20.0 | 2.0 | 14.070 | O | 1 |
| 5190 | 9.0 | 69.0 | 20.0 | 2.0 | 13.652 | O | 1 |
| 5191 | 8.0 | 70.0 | 20.0 | 2.0 | 13.234 | O | 1 |
| 5192 | 7.0 | 71.0 | 20.0 | 2.0 | 12.816 | O | 1 |
| 5193 | 6.0 | 72.0 | 20.0 | 2.0 | 12.398 | O | 1 |
| 5194 | 5.0 | 73.0 | 20.0 | 2.0 | 11.980 | O | 1 |
| 5195 | 4.0 | 74.0 | 20.0 | 2.0 | 11.562 | O | 1 |
| 5196 | 3.0 | 75.0 | 20.0 | 2.0 | 11.145 | O | 1 |
| 5197 | 2.0 | 76.0 | 20.0 | 2.0 | 10.727 | O | 1 |
| 5198 | 1.0 | 77.0 | 20.0 | 2.0 | 10.309 | O | 1 |
| 5199 | 0.0 | 78.0 | 20.0 | 2.0 | 9.891 | O | 1 |
| 5200 | 24.0 | 49.0 | 25.0 | 2.0 | 19.153 | X | 1 |
| 5201 | 23.6 | 49.4 | 25.0 | 2.0 | 19.010 | X | 1 |
| 5202 | 23.5 | 49.5 | 25.0 | 2.0 | 18.975 | O | 1 |
| 5203 | 23.0 | 50.0 | 25.0 | 2.0 | 18.796 | O | 1 |
| 5204 | 20.0 | 53.0 | 25.0 | 2.0 | 17.726 | O | 1 |
| 5205 | 10.0 | 63.0 | 25.0 | 2.0 | 14.110 | O | 1 |
| 5206 | 9.0 | 64.0 | 25.0 | 2.0 | 13.692 | O | 1 |
| 5207 | 8.0 | 65.0 | 25.0 | 2.0 | 13.274 | O | 1 |
| 5208 | 7.0 | 66.0 | 25.0 | 2.0 | 12.856 | O | 1 |
| 5209 | 6.0 | 67.0 | 25.0 | 2.0 | 12.438 | O | 1 |
| 5210 | 5.0 | 68.0 | 25.0 | 2.0 | 12.020 | O | 1 |
| 5211 | 4.0 | 69.0 | 25.0 | 2.0 | 11.603 | O | 1 |
| 5212 | 3.0 | 70.0 | 25.0 | 2.0 | 11.185 | O | 1 |
| 5213 | 2.0 | 71.0 | 25.0 | 2.0 | 10.767 | O | 1 |
| 5214 | 1.0 | 72.0 | 25.0 | 2.0 | 10.349 | O | 1 |
| 5215 | 0.0 | 73.0 | 25.0 | 2.0 | 9.931 | O | 1 |
| 5216 | 24.0 | 44.0 | 30.0 | 2.0 | 19.183 | X | 1 |
| 5217 | 23.5 | 44.5 | 30.0 | 2.0 | 19.005 | X | 1 |
| 5218 | 23.4 | 44.6 | 30.0 | 2.0 | 18.969 | O | 1 |
| 5219 | 23.0 | 45.0 | 30.0 | 2.0 | 18.826 | O | 1 |
| 5220 | 20.0 | 48.0 | 30.0 | 2.0 | 17.756 | O | 1 |
| 5221 | 10.0 | 58.0 | 30.0 | 2.0 | 14.150 | O | 1 |
| 5222 | 9.0 | 59.0 | 30.0 | 2.0 | 13.732 | O | 1 |
| 5223 | 8.0 | 60.0 | 30.0 | 2.0 | 13.314 | O | 1 |
| 5224 | 7.0 | 61.0 | 30.0 | 2.0 | 12.896 | O | 1 |
| 5225 | 6.0 | 62.0 | 30.0 | 2.0 | 12.479 | O | 1 |
| 5226 | 5.0 | 63.0 | 30.0 | 2.0 | 12.061 | O | 1 |
| 5227 | 4.0 | 64.0 | 30.0 | 2.0 | 11.643 | O | 1 |
| 5228 | 3.0 | 65.0 | 30.0 | 2.0 | 11.225 | O | 1 |
| 5229 | 2.0 | 66.0 | 30.0 | 2.0 | 10.807 | O | 1 |
| 5230 | 1.0 | 67.0 | 30.0 | 2.0 | 10.389 | O | 1 |
| 5231 | 0.0 | 68.0 | 30.0 | 2.0 | 9.971 | O | 1 |
| 5232 | 24.0 | 39.0 | 35.0 | 2.0 | 19.213 | X | 1 |
| 5233 | 23.5 | 39.5 | 35.0 | 2.0 | 19.035 | X | 1 |

[Table 85]

| 5234 | 23.4 | 39.6 | 35.0 | 2.0 | 18.999 | O | 1 |
|------|------|------|------|-----|--------|---|---|
| 5235 | 23.0 | 40.0 | 35.0 | 2.0 | 18.856 | O | 1 |
| 5236 | 20.0 | 43.0 | 35.0 | 2.0 | 17.786 | O | 1 |
| 5237 | 10.0 | 53.0 | 35.0 | 2.0 | 14.190 | O | 1 |
| 5238 | 9.0 | 54.0 | 35.0 | 2.0 | 13.772 | O | 1 |
| 5239 | 8.0 | 55.0 | 35.0 | 2.0 | 13.355 | O | 1 |
| 5240 | 7.0 | 56.0 | 35.0 | 2.0 | 12.937 | O | 1 |
| 5241 | 6.0 | 57.0 | 35.0 | 2.0 | 12.519 | O | 1 |
| 5242 | 5.0 | 58.0 | 35.0 | 2.0 | 12.101 | O | 1 |
| 5243 | 4.0 | 59.0 | 35.0 | 2.0 | 11.683 | O | 1 |
| 5244 | 3.0 | 60.0 | 35.0 | 2.0 | 11.265 | O | 1 |
| 5245 | 2.0 | 61.0 | 35.0 | 2.0 | 10.847 | O | 1 |
| 5246 | 1.0 | 62.0 | 35.0 | 2.0 | 10.429 | O | 1 |
| 5247 | 0.0 | 63.0 | 35.0 | 2.0 | 10.011 | O | 1 |
| 5248 | 24.0 | 34.0 | 40.0 | 2.0 | 19.243 | X | 1 |
| 5249 | 23.4 | 34.6 | 40.0 | 2.0 | 19.029 | X | 1 |
| 5250 | 23.3 | 34.7 | 40.0 | 2.0 | 18.993 | O | 1 |
| 5251 | 23.0 | 35.0 | 40.0 | 2.0 | 18.886 | O | 1 |
| 5252 | 20.0 | 38.0 | 40.0 | 2.0 | 17.816 | O | 1 |
| 5253 | 10.0 | 48.0 | 40.0 | 2.0 | 14.230 | O | 1 |
| 5254 | 9.0 | 49.0 | 40.0 | 2.0 | 13.813 | O | 1 |
| 5255 | 8.0 | 50.0 | 40.0 | 2.0 | 13.395 | O | 1 |
| 5256 | 7.0 | 51.0 | 40.0 | 2.0 | 12.977 | O | 1 |
| 5257 | 6.0 | 52.0 | 40.0 | 2.0 | 12.559 | O | 1 |
| 5258 | 5.0 | 53.0 | 40.0 | 2.0 | 12.141 | O | 1 |
| 5259 | 4.0 | 54.0 | 40.0 | 2.0 | 11.723 | O | 1 |
| 5260 | 3.0 | 55.0 | 40.0 | 2.0 | 11.305 | O | 1 |
| 5261 | 2.0 | 56.0 | 40.0 | 2.0 | 10.887 | O | 1 |
| 5262 | 1.0 | 57.0 | 40.0 | 2.0 | 10.469 | O | 1 |
| 5263 | 0.0 | 58.0 | 40.0 | 2.0 | 10.051 | O | 1 |
| 5264 | 24.0 | 29.0 | 45.0 | 2.0 | 19.273 | X | 1 |
| 5265 | 23.3 | 29.7 | 45.0 | 2.0 | 19.023 | X | 1 |
| 5266 | 23.2 | 29.8 | 45.0 | 2.0 | 18.988 | O | 1 |
| 5267 | 23.0 | 30.0 | 45.0 | 2.0 | 18.916 | O | 1 |
| 5268 | 20.0 | 33.0 | 45.0 | 2.0 | 17.846 | O | 1 |
| 5269 | 10.0 | 43.0 | 45.0 | 2.0 | 14.271 | O | 1 |
| 5270 | 9.0 | 44.0 | 45.0 | 2.0 | 13.853 | O | 1 |
| 5271 | 8.0 | 45.0 | 45.0 | 2.0 | 13.435 | O | 1 |
| 5272 | 7.0 | 46.0 | 45.0 | 2.0 | 13.017 | O | 1 |
| 5273 | 6.0 | 47.0 | 45.0 | 2.0 | 12.599 | O | 1 |
| 5274 | 5.0 | 48.0 | 45.0 | 2.0 | 12.181 | O | 1 |
| 5275 | 4.0 | 49.0 | 45.0 | 2.0 | 11.763 | O | 1 |
| 5276 | 3.0 | 50.0 | 45.0 | 2.0 | 11.345 | O | 1 |
| 5277 | 2.0 | 51.0 | 45.0 | 2.0 | 10.927 | O | 1 |
| 5278 | 1.0 | 52.0 | 45.0 | 2.0 | 10.509 | O | 1 |
| 5279 | 0.0 | 53.0 | 45.0 | 2.0 | 10.091 | O | 1 |
| 5280 | 24.0 | 24.0 | 50.0 | 2.0 | 19.303 | X | 1 |
| 5281 | 23.2 | 24.8 | 50.0 | 2.0 | 19.017 | X | 1 |
| 5282 | 23.1 | 24.9 | 50.0 | 2.0 | 18.982 | O | 1 |
| 5283 | 23.0 | 25.0 | 50.0 | 2.0 | 18.946 | O | 1 |

[Table 86]

| 5284 | 20.0 | 28.0 | 50.0 | 2.0 | 17.876 | O | 1 |
|---|---|---|---|---|---|---|---|
| 5285 | 10.0 | 38.0 | 50.0 | 2.0 | 14.308 | O | 1 |
| 5286 | 9.0 | 39.0 | 50.0 | 2.0 | 13.893 | O | 1 |
| 5287 | 8.0 | 40.0 | 50.0 | 2.0 | 13.475 | O | 1 |
| 5288 | 7.0 | 41.0 | 50.0 | 2.0 | 13.057 | O | 1 |
| 5289 | 6.0 | 42.0 | 50.0 | 2.0 | 12.639 | O | 1 |
| 5290 | 5.0 | 43.0 | 50.0 | 2.0 | 12.221 | O | 1 |
| 5291 | 4.0 | 44.0 | 50.0 | 2.0 | 11.803 | O | 1 |
| 5292 | 3.0 | 45.0 | 50.0 | 2.0 | 11.385 | O | 1 |
| 5293 | 2.0 | 46.0 | 50.0 | 2.0 | 10.967 | O | 1 |
| 5294 | 1.0 | 47.0 | 50.0 | 2.0 | 10.549 | O | 1 |
| 5295 | 0.0 | 48.0 | 50.0 | 2.0 | 10.132 | O | 1 |
| 5296 | 24.0 | 19.0 | 55.0 | 2.0 | 19.333 | X | 1 |
| 5297 | 23.1 | 19.9 | 55.0 | 2.0 | 19.012 | X | 1 |
| 5298 | 23.0 | 20.0 | 55.0 | 2.0 | 18.976 | O | 1 |
| 5299 | 20.0 | 23.0 | 55.0 | 2.0 | 17.906 | O | 1 |
| 5300 | 10.0 | 33.0 | 55.0 | 2.0 | 14.338 | O | 1 |
| 5301 | 9.0 | 34.0 | 55.0 | 2.0 | 13.933 | O | 1 |
| 5302 | 8.0 | 35.0 | 55.0 | 2.0 | 13.515 | O | 1 |
| 5303 | 7.0 | 36.0 | 55.0 | 2.0 | 13.097 | O | 1 |
| 5304 | 6.0 | 37.0 | 55.0 | 2.0 | 12.679 | O | 1 |
| 5305 | 5.0 | 38.0 | 55.0 | 2.0 | 12.261 | O | 1 |
| 5306 | 4.0 | 39.0 | 55.0 | 2.0 | 11.843 | O | 1 |
| 5307 | 3.0 | 40.0 | 55.0 | 2.0 | 11.425 | O | 1 |
| 5308 | 2.0 | 41.0 | 55.0 | 2.0 | 11.008 | O | 1 |
| 5309 | 1.0 | 42.0 | 55.0 | 2.0 | 10.590 | O | 1 |
| 5310 | 0.0 | 43.0 | 55.0 | 2.0 | 10.172 | O | 1 |
| 5311 | 23.0 | 15.0 | 60.0 | 2.0 | 19.006 | X | 1 |
| 5312 | 22.9 | 15.1 | 60.0 | 2.0 | 18.970 | O | 1 |
| 5313 | 22.0 | 16.0 | 60.0 | 2.0 | 18.649 | O | 1 |
| 5314 | 20.0 | 18.0 | 60.0 | 2.0 | 17.936 | O | 1 |
| 5315 | 10.0 | 28.0 | 60.0 | 2.0 | 14.367 | O | 1 |
| 5316 | 9.0 | 29.0 | 60.0 | 2.0 | 13.973 | O | 1 |
| 5317 | 8.0 | 30.0 | 60.0 | 2.0 | 13.555 | O | 1 |
| 5318 | 7.0 | 31.0 | 60.0 | 2.0 | 13.137 | O | 1 |
| 5319 | 6.0 | 32.0 | 60.0 | 2.0 | 12.719 | O | 1 |
| 5320 | 5.0 | 33.0 | 60.0 | 2.0 | 12.301 | O | 1 |
| 5321 | 4.0 | 34.0 | 60.0 | 2.0 | 11.884 | O | 1 |
| 5322 | 3.0 | 35.0 | 60.0 | 2.0 | 11.466 | O | 1 |
| 5323 | 2.0 | 36.0 | 60.0 | 2.0 | 11.048 | O | 1 |
| 5324 | 1.0 | 37.0 | 60.0 | 2.0 | 10.630 | O | 1 |
| 5325 | 0.0 | 38.0 | 60.0 | 2.0 | 10.212 | O | 1 |
| 5326 | 23.0 | 10.0 | 65.0 | 2.0 | 19.036 | X | 1 |
| 5327 | 22.9 | 10.1 | 65.0 | 2.0 | 19.000 | X | 1 |
| 5328 | 22.8 | 10.2 | 65.0 | 2.0 | 18.965 | O | 1 |
| 5329 | 22.0 | 11.0 | 65.0 | 2.0 | 18.679 | O | 1 |
| 5330 | 20.0 | 13.0 | 65.0 | 2.0 | 17.966 | O | 1 |
| 5331 | 10.0 | 23.0 | 65.0 | 2.0 | 14.397 | O | 1 |
| 5332 | 9.0 | 24.0 | 65.0 | 2.0 | 14.013 | O | 1 |
| 5333 | 8.0 | 25.0 | 65.0 | 2.0 | 13.595 | O | 1 |

[Table 87]

| 5334 | 7.0 | 26.0 | 65.0 | 2.0 | 13.177 | O | 1 |
|------|------|------|------|-----|--------|---|---|
| 5335 | 6.0 | 27.0 | 65.0 | 2.0 | 12.759 | O | 1 |
| 5336 | 5.0 | 28.0 | 65.0 | 2.0 | 12.342 | O | 1 |
| 5337 | 4.0 | 29.0 | 65.0 | 2.0 | 11.924 | O | 1 |
| 5338 | 3.0 | 30.0 | 65.0 | 2.0 | 11.506 | O | 1 |
| 5339 | 2.0 | 31.0 | 65.0 | 2.0 | 11.088 | O | 1 |
| 5340 | 1.0 | 32.0 | 65.0 | 2.0 | 10.670 | O | 1 |
| 5341 | 0.0 | 33.0 | 65.0 | 2.0 | 10.252 | O | 1 |
| 5342 | 23.0 | 5.0 | 70.0 | 2.0 | 19.066 | X | 1 |
| 5343 | 22.9 | 5.1 | 70.0 | 2.0 | 19.030 | X | 1 |
| 5344 | 22.8 | 5.2 | 70.0 | 2.0 | 18.995 | O | 1 |
| 5345 | 22.0 | 6.0 | 70.0 | 2.0 | 18.709 | O | 1 |
| 5346 | 20.0 | 8.0 | 70.0 | 2.0 | 17.996 | O | 1 |
| 5347 | 10.0 | 18.0 | 70.0 | 2.0 | 14.427 | O | 1 |
| 5348 | 9.0 | 19.0 | 70.0 | 2.0 | 14.053 | O | 1 |
| 5349 | 8.0 | 20.0 | 70.0 | 2.0 | 13.635 | O | 1 |
| 5350 | 7.0 | 21.0 | 70.0 | 2.0 | 13.218 | O | 1 |
| 5351 | 6.0 | 22.0 | 70.0 | 2.0 | 12.800 | O | 1 |
| 5352 | 5.0 | 23.0 | 70.0 | 2.0 | 12.382 | O | 1 |
| 5353 | 4.0 | 24.0 | 70.0 | 2.0 | 11.964 | O | 1 |
| 5354 | 3.0 | 25.0 | 70.0 | 2.0 | 11.546 | O | 1 |
| 5355 | 2.0 | 26.0 | 70.0 | 2.0 | 11.128 | O | 1 |
| 5356 | 1.0 | 27.0 | 70.0 | 2.0 | 10.710 | O | 1 |
| 5357 | 0.0 | 28.0 | 70.0 | 2.0 | 10.292 | O | 1 |
| 5358 | 25.0 | 66.0 | 5.0 | 4.0 | 19.177 | X | 1 |
| 5359 | 24.6 | 66.4 | 5.0 | 4.0 | 19.034 | X | 1 |
| 5360 | 24.5 | 66.5 | 5.0 | 4.0 | 18.999 | O | 1 |
| 5361 | 24.0 | 67.0 | 5.0 | 4.0 | 18.820 | O | 1 |
| 5362 | 20.0 | 71.0 | 5.0 | 4.0 | 17.393 | O | 1 |
| 5363 | 10.0 | 81.0 | 5.0 | 4.0 | 13.751 | O | 1 |
| 5364 | 9.0 | 82.0 | 5.0 | 4.0 | 13.333 | O | 1 |
| 5365 | 8.0 | 83.0 | 5.0 | 4.0 | 12.915 | O | 1 |
| 5366 | 7.0 | 84.0 | 5.0 | 4.0 | 12.497 | O | 1 |
| 5367 | 6.0 | 85.0 | 5.0 | 4.0 | 12.079 | O | 1 |
| 5368 | 5.0 | 86.0 | 5.0 | 4.0 | 11.661 | O | 1 |
| 5369 | 4.0 | 87.0 | 5.0 | 4.0 | 11.243 | O | 1 |
| 5370 | 3.0 | 88.0 | 5.0 | 4.0 | 10.826 | O | 1 |
| 5371 | 2.0 | 89.0 | 5.0 | 4.0 | 10.408 | O | 1 |
| 5372 | 1.0 | 90.0 | 5.0 | 4.0 | 9.990 | O | 1 |
| 5373 | 0.0 | 91.0 | 5.0 | 4.0 | 9.572 | O | 1 |
| 5374 | 25.0 | 61.0 | 10.0 | 4.0 | 19.207 | X | 1 |
| 5375 | 24.5 | 61.5 | 10.0 | 4.0 | 19.029 | X | 1 |
| 5376 | 24.4 | 61.6 | 10.0 | 4.0 | 18.993 | O | 1 |
| 5377 | 24.0 | 62.0 | 10.0 | 4.0 | 18.850 | O | 1 |
| 5378 | 20.0 | 66.0 | 10.0 | 4.0 | 17.423 | O | 1 |
| 5379 | 10.0 | 76.0 | 10.0 | 4.0 | 13.791 | O | 1 |
| 5380 | 9.0 | 77.0 | 10.0 | 4.0 | 13.373 | O | 1 |
| 5381 | 8.0 | 78.0 | 10.0 | 4.0 | 12.955 | O | 1 |
| 5382 | 7.0 | 79.0 | 10.0 | 4.0 | 12.537 | O | 1 |
| 5383 | 6.0 | 80.0 | 10.0 | 4.0 | 12.119 | O | 1 |

[Table 88]

| 5384 | 5.0 | 81.0 | 10.0 | 4.0 | 11.702 | O | 1 |
|---|---|---|---|---|---|---|---|
| 5385 | 4.0 | 82.0 | 10.0 | 4.0 | 11.284 | O | 1 |
| 5386 | 3.0 | 83.0 | 10.0 | 4.0 | 10.866 | O | 1 |
| 5387 | 2.0 | 84.0 | 10.0 | 4.0 | 10.448 | O | 1 |
| 5388 | 1.0 | 85.0 | 10.0 | 4.0 | 10.030 | O | 1 |
| 5389 | 0.0 | 86.0 | 10.0 | 4.0 | 9.612 | O | 1 |
| 5390 | 25.0 | 56.0 | 15.0 | 4.0 | 19.237 | X | 1 |
| 5391 | 24.4 | 56.6 | 15.0 | 4.0 | 19.023 | X | 1 |
| 5392 | 24.3 | 56.7 | 15.0 | 4.0 | 18.987 | O | 1 |
| 5393 | 24.0 | 57.0 | 15.0 | 4.0 | 18.880 | O | 1 |
| 5394 | 20.0 | 61.0 | 15.0 | 4.0 | 17.453 | O | 1 |
| 5395 | 10.0 | 71.0 | 15.0 | 4.0 | 13.831 | O | 1 |
| 5396 | 9.0 | 72.0 | 15.0 | 4.0 | 13.413 | O | 1 |
| 5397 | 8.0 | 73.0 | 15.0 | 4.0 | 12.995 | O | 1 |
| 5398 | 7.0 | 74.0 | 15.0 | 4.0 | 12.577 | O | 1 |
| 5399 | 6.0 | 75.0 | 15.0 | 4.0 | 12.160 | O | 1 |
| 5400 | 5.0 | 76.0 | 15.0 | 4.0 | 11.742 | O | 1 |
| 5401 | 4.0 | 77.0 | 15.0 | 4.0 | 11.324 | O | 1 |
| 5402 | 3.0 | 78.0 | 15.0 | 4.0 | 10.906 | O | 1 |
| 5403 | 2.0 | 79.0 | 15.0 | 4.0 | 10.488 | O | 1 |
| 5404 | 1.0 | 80.0 | 15.0 | 4.0 | 10.070 | O | 1 |
| 5405 | 0.0 | 81.0 | 15.0 | 4.0 | 9.652 | O | 1 |
| 5406 | 25.0 | 51.0 | 20.0 | 4.0 | 19.267 | X | 1 |
| 5407 | 24.3 | 51.7 | 20.0 | 4.0 | 19.017 | X | 1 |
| 5408 | 24.2 | 51.8 | 20.0 | 4.0 | 18.981 | O | 1 |
| 5409 | 24.0 | 52.0 | 20.0 | 4.0 | 18.910 | O | 1 |
| 5410 | 20.0 | 56.0 | 20.0 | 4.0 | 17.483 | O | 1 |
| 5411 | 10.0 | 66.0 | 20.0 | 4.0 | 13.871 | O | 1 |
| 5412 | 9.0 | 67.0 | 20.0 | 4.0 | 13.453 | O | 1 |
| 5413 | 8.0 | 68.0 | 20.0 | 4.0 | 13.036 | O | 1 |
| 5414 | 7.0 | 69.0 | 20.0 | 4.0 | 12.618 | O | 1 |
| 5415 | 6.0 | 70.0 | 20.0 | 4.0 | 12.200 | O | 1 |
| 5416 | 5.0 | 71.0 | 20.0 | 4.0 | 11.782 | O | 1 |
| 5417 | 4.0 | 72.0 | 20.0 | 4.0 | 11.364 | O | 1 |
| 5418 | 3.0 | 73.0 | 20.0 | 4.0 | 10.946 | O | 1 |
| 5419 | 2.0 | 74.0 | 20.0 | 4.0 | 10.528 | O | 1 |
| 5420 | 1.0 | 75.0 | 20.0 | 4.0 | 10.110 | O | 1 |
| 5421 | 0.0 | 76.0 | 20.0 | 4.0 | 9.692 | O | 1 |
| 5422 | 25.0 | 46.0 | 25.0 | 4.0 | 19.297 | X | 1 |
| 5423 | 24.2 | 46.8 | 25.0 | 4.0 | 19.011 | X | 1 |
| 5424 | 24.1 | 46.9 | 25.0 | 4.0 | 18.976 | O | 1 |
| 5425 | 24.0 | 47.0 | 25.0 | 4.0 | 18.940 | O | 1 |
| 5426 | 20.0 | 51.0 | 25.0 | 4.0 | 17.513 | O | 1 |
| 5427 | 10.0 | 61.0 | 25.0 | 4.0 | 13.912 | O | 1 |
| 5428 | 9.0 | 62.0 | 25.0 | 4.0 | 13.494 | O | 1 |
| 5429 | 8.0 | 63.0 | 25.0 | 4.0 | 13.076 | O | 1 |
| 5430 | 7.0 | 64.0 | 25.0 | 4.0 | 12.658 | O | 1 |
| 5431 | 6.0 | 65.0 | 25.0 | 4.0 | 12.240 | O | 1 |
| 5432 | 5.0 | 66.0 | 25.0 | 4.0 | 11.822 | O | 1 |
| 5433 | 4.0 | 67.0 | 25.0 | 4.0 | 11.404 | O | 1 |

[Table 89]

| 5434 | 3.0 | 68.0 | 25.0 | 4.0 | 10.986 | O | 1 |
|------|-----|------|------|-----|--------|---|---|
| 5435 | 2.0 | 69.0 | 25.0 | 4.0 | 10.568 | O | 1 |
| 5436 | 1.0 | 70.0 | 25.0 | 4.0 | 10.150 | O | 1 |
| 5437 | 0.0 | 71.0 | 25.0 | 4.0 | 9.732 | O | 1 |
| 5438 | 25.0 | 41.0 | 30.0 | 4.0 | 19.327 | X | 1 |
| 5439 | 24.1 | 41.9 | 30.0 | 4.0 | 19.006 | X | 1 |
| 5440 | 24.0 | 42.0 | 30.0 | 4.0 | 18.970 | O | 1 |
| 5441 | 20.0 | 46.0 | 30.0 | 4.0 | 17.543 | O | 1 |
| 5442 | 10.0 | 56.0 | 30.0 | 4.0 | 13.952 | O | 1 |
| 5443 | 9.0 | 57.0 | 30.0 | 4.0 | 13.534 | O | 1 |
| 5444 | 8.0 | 58.0 | 30.0 | 4.0 | 13.116 | O | 1 |
| 5445 | 7.0 | 59.0 | 30.0 | 4.0 | 12.698 | O | 1 |
| 5446 | 6.0 | 60.0 | 30.0 | 4.0 | 12.280 | O | 1 |
| 5447 | 5.0 | 61.0 | 30.0 | 4.0 | 11.862 | O | 1 |
| 5448 | 4.0 | 62.0 | 30.0 | 4.0 | 11.444 | O | 1 |
| 5449 | 3.0 | 63.0 | 30.0 | 4.0 | 11.026 | O | 1 |
| 5450 | 2.0 | 64.0 | 30.0 | 4.0 | 10.608 | O | 1 |
| 5451 | 1.0 | 65.0 | 30.0 | 4.0 | 10.190 | O | 1 |
| 5452 | 0.0 | 66.0 | 30.0 | 4.0 | 9.772 | O | 1 |
| 5453 | 24.0 | 37.0 | 35.0 | 4.0 | 19.000 | **X** | 1 |
| 5454 | 23.9 | 37.1 | 35.0 | 4.0 | 18.964 | O | 1 |
| 5455 | 23.0 | 38.0 | 35.0 | 4.0 | 18.643 | O | 1 |
| 5456 | 20.0 | 41.0 | 35.0 | 4.0 | 17.573 | O | 1 |
| 5457 | 10.0 | 51.0 | 35.0 | 4.0 | 13.992 | O | 1 |
| 5458 | 9.0 | 52.0 | 35.0 | 4.0 | 13.574 | O | 1 |
| 5459 | 8.0 | 53.0 | 35.0 | 4.0 | 13.156 | O | 1 |
| 5460 | 7.0 | 54.0 | 35.0 | 4.0 | 12.738 | O | 1 |
| 5461 | 6.0 | 55.0 | 35.0 | 4.0 | 12.320 | O | 1 |
| 5462 | 5.0 | 56.0 | 35.0 | 4.0 | 11.902 | O | 1 |
| 5463 | 4.0 | 57.0 | 35.0 | 4.0 | 11.484 | O | 1 |
| 5464 | 3.0 | 58.0 | 35.0 | 4.0 | 11.066 | O | 1 |
| 5465 | 2.0 | 59.0 | 35.0 | 4.0 | 10.648 | O | 1 |
| 5466 | 1.0 | 60.0 | 35.0 | 4.0 | 10.231 | O | 1 |
| 5467 | 0.0 | 61.0 | 35.0 | 4.0 | 9.813 | O | 1 |
| 5468 | 24.0 | 32.0 | 40.0 | 4.0 | 19.030 | X | 1 |
| 5469 | 23.9 | 32.1 | 40.0 | 4.0 | 18.994 | O | 1 |
| 5470 | 23.0 | 33.0 | 40.0 | 4.0 | 18.673 | O | 1 |
| 5471 | 20.0 | 36.0 | 40.0 | 4.0 | 17.603 | O | 1 |
| 5472 | 10.0 | 46.0 | 40.0 | 4.0 | 14.032 | O | 1 |
| 5473 | 9.0 | 47.0 | 40.0 | 4.0 | 13.614 | O | 1 |
| 5474 | 8.0 | 48.0 | 40.0 | 4.0 | 13.196 | O | 1 |
| 5475 | 7.0 | 49.0 | 40.0 | 4.0 | 12.778 | O | 1 |
| 5476 | 6.0 | 50.0 | 40.0 | 4.0 | 12.360 | O | 1 |
| 5477 | 5.0 | 51.0 | 40.0 | 4.0 | 11.942 | O | 1 |
| 5478 | 4.0 | 52.0 | 40.0 | 4.0 | 11.524 | O | 1 |
| 5479 | 3.0 | 53.0 | 40.0 | 4.0 | 11.106 | O | 1 |
| 5480 | 2.0 | 54.0 | 40.0 | 4.0 | 10.689 | O | 1 |
| 5481 | 1.0 | 55.0 | 40.0 | 4.0 | 10.271 | O | 1 |
| 5482 | 0.0 | 56.0 | 40.0 | 4.0 | 9.853 | O | 1 |
| 5483 | 24.0 | 27.0 | 45.0 | 4.0 | 19.060 | X | 1 |

[Table 90]

| 5484 | 23.9 | 27.1 | 45.0 | 4.0 | 19.024 | X | 1 |
|---|---|---|---|---|---|---|---|
| 5485 | 23.8 | 27.2 | 45.0 | 4.0 | 18.989 | O | 1 |
| 5486 | 23.0 | 28.0 | 45.0 | 4.0 | 18.703 | O | 1 |
| 5487 | 20.0 | 31.0 | 45.0 | 4.0 | 17.633 | O | 1 |
| 5488 | 10.0 | 41.0 | 45.0 | 4.0 | 14.065 | O | 1 |
| 5489 | 9.0 | 42.0 | 45.0 | 4.0 | 13.654 | O | 1 |
| 5490 | 8.0 | 43.0 | 45.0 | 4.0 | 13.236 | O | 1 |
| 5491 | 7.0 | 44.0 | 45.0 | 4.0 | 12.818 | O | 1 |
| 5492 | 6.0 | 45.0 | 45.0 | 4.0 | 12.400 | O | 1 |
| 5493 | 5.0 | 46.0 | 45.0 | 4.0 | 11.982 | O | 1 |
| 5494 | 4.0 | 47.0 | 45.0 | 4.0 | 11.565 | O | 1 |
| 5495 | 3.0 | 48.0 | 45.0 | 4.0 | 11.147 | O | 1 |
| 5496 | 2.0 | 49.0 | 45.0 | 4.0 | 10.729 | O | 1 |
| 5497 | 1.0 | 50.0 | 45.0 | 4.0 | 10.311 | O | 1 |
| 5498 | 0.0 | 51.0 | 45.0 | 4.0 | 9.893 | O | 1 |
| 5499 | 24.0 | 22.0 | 50.0 | 4.0 | 19.090 | X | 1 |
| 5500 | 23.8 | 22.2 | 50.0 | 4.0 | 19.019 | X | 1 |
| 5501 | 23.7 | 22.3 | 50.0 | 4.0 | 18.983 | O | 1 |
| 5502 | 23.0 | 23.0 | 50.0 | 4.0 | 18.733 | O | 1 |
| 5503 | 20.0 | 26.0 | 50.0 | 4.0 | 17.663 | O | 1 |
| 5504 | 10.0 | 36.0 | 50.0 | 4.0 | 14.094 | O | 1 |
| 5505 | 9.0 | 37.0 | 50.0 | 4.0 | 13.694 | O | 1 |
| 5506 | 8.0 | 38.0 | 50.0 | 4.0 | 13.276 | O | 1 |
| 5507 | 7.0 | 39.0 | 50.0 | 4.0 | 12.858 | O | 1 |
| 5508 | 6.0 | 40.0 | 50.0 | 4.0 | 12.441 | O | 1 |
| 5509 | 5.0 | 41.0 | 50.0 | 4.0 | 12.023 | O | 1 |
| 5510 | 4.0 | 42.0 | 50.0 | 4.0 | 11.605 | O | 1 |
| 5511 | 3.0 | 43.0 | 50.0 | 4.0 | 11.187 | O | 1 |
| 5512 | 2.0 | 44.0 | 50.0 | 4.0 | 10.769 | O | 1 |
| 5513 | 1.0 | 45.0 | 50.0 | 4.0 | 10.351 | O | 1 |
| 5514 | 0.0 | 46.0 | 50.0 | 4.0 | 9.933 | O | 1 |
| 5515 | 24.0 | 17.0 | 55.0 | 4.0 | 19.120 | X | 1 |
| 5516 | 23.7 | 17.3 | 55.0 | 4.0 | 19.013 | X | 1 |
| 5517 | 23.6 | 17.4 | 55.0 | 4.0 | 18.977 | O | 1 |
| 5518 | 23.0 | 18.0 | 55.0 | 4.0 | 18.763 | O | 1 |
| 5519 | 20.0 | 21.0 | 55.0 | 4.0 | 17.693 | O | 1 |
| 5520 | 10.0 | 31.0 | 55.0 | 4.0 | 14.124 | O | 1 |
| 5521 | 9.0 | 32.0 | 55.0 | 4.0 | 13.734 | O | 1 |
| 5522 | 8.0 | 33.0 | 55.0 | 4.0 | 13.316 | O | 1 |
| 5523 | 7.0 | 34.0 | 55.0 | 4.0 | 12.899 | O | 1 |
| 5524 | 6.0 | 35.0 | 55.0 | 4.0 | 12.481 | O | 1 |
| 5525 | 5.0 | 36.0 | 55.0 | 4.0 | 12.063 | O | 1 |
| 5526 | 4.0 | 37.0 | 55.0 | 4.0 | 11.645 | O | 1 |
| 5527 | 3.0 | 38.0 | 55.0 | 4.0 | 11.227 | O | 1 |
| 5528 | 2.0 | 39.0 | 55.0 | 4.0 | 10.809 | O | 1 |
| 5529 | 1.0 | 40.0 | 55.0 | 4.0 | 10.391 | O | 1 |
| 5530 | 0.0 | 41.0 | 55.0 | 4.0 | 9.973 | O | 1 |
| 5531 | 24.0 | 12.0 | 60.0 | 4.0 | 19.150 | X | 1 |
| 5532 | 23.6 | 12.4 | 60.0 | 4.0 | 19.007 | X | 1 |
| 5533 | 23.5 | 12.5 | 60.0 | 4.0 | 18.971 | O | 1 |

[Table 91]

| 5534 | 23.0 | 13.0 | 60.0 | 4.0 | 18.793 | O | 1 |
|------|------|------|------|-----|--------|---|---|
| 5535 | 20.0 | 16.0 | 60.0 | 4.0 | 17.723 | O | 1 |
| 5536 | 10.0 | 26.0 | 60.0 | 4.0 | 14.154 | O | 1 |
| 5537 | 9.0 | 27.0 | 60.0 | 4.0 | 13.775 | O | 1 |
| 5538 | 8.0 | 28.0 | 60.0 | 4.0 | 13.357 | O | 1 |
| 5539 | 7.0 | 29.0 | 60.0 | 4.0 | 12.939 | O | 1 |
| 5540 | 6.0 | 30.0 | 60.0 | 4.0 | 12.521 | O | 1 |
| 5541 | 5.0 | 31.0 | 60.0 | 4.0 | 12.103 | O | 1 |
| 5542 | 4.0 | 32.0 | 60.0 | 4.0 | 11.685 | O | 1 |
| 5543 | 3.0 | 33.0 | 60.0 | 4.0 | 11.267 | O | 1 |
| 5544 | 2.0 | 34.0 | 60.0 | 4.0 | 10.849 | O | 1 |
| 5545 | 1.0 | 35.0 | 60.0 | 4.0 | 10.431 | O | 1 |
| 5546 | 0.0 | 36.0 | 60.0 | 4.0 | 10.013 | O | 1 |
| 5547 | 24.0 | 7.0 | 65.0 | 4.0 | 19.180 | X | 1 |
| 5548 | 23.5 | 7.5 | 65.0 | 4.0 | 19.001 | X | 1 |
| 5549 | 23.4 | 7.6 | 65.0 | 4.0 | 18.966 | O | 1 |
| 5550 | 23.0 | 8.0 | 65.0 | 4.0 | 18.823 | O | 1 |
| 5551 | 20.0 | 11.0 | 65.0 | 4.0 | 17.753 | O | 1 |
| 5552 | 10.0 | 21.0 | 65.0 | 4.0 | 14.184 | O | 1 |
| 5553 | 9.0 | 22.0 | 65.0 | 4.0 | 13.815 | O | 1 |
| 5554 | 8.0 | 23.0 | 65.0 | 4.0 | 13.397 | O | 1 |
| 5555 | 7.0 | 24.0 | 65.0 | 4.0 | 12.979 | O | 1 |
| 5556 | 6.0 | 25.0 | 65.0 | 4.0 | 12.561 | O | 1 |
| 5557 | 5.0 | 26.0 | 65.0 | 4.0 | 12.143 | O | 1 |
| 5558 | 4.0 | 27.0 | 65.0 | 4.0 | 11.725 | O | 1 |
| 5559 | 3.0 | 28.0 | 65.0 | 4.0 | 11.307 | O | 1 |
| 5560 | 2.0 | 29.0 | 65.0 | 4.0 | 10.889 | O | 1 |
| 5561 | 1.0 | 30.0 | 65.0 | 4.0 | 10.471 | O | 1 |
| 5562 | 0.0 | 31.0 | 65.0 | 4.0 | 10.053 | O | 1 |
| 5563 | 24.0 | 2.0 | 70.0 | 4.0 | 19.210 | X | 1 |
| 5564 | 23.5 | 2.5 | 70.0 | 4.0 | 19.031 | X | 1 |
| 5565 | 23.4 | 2.6 | 70.0 | 4.0 | 18.996 | O | 1 |
| 5566 | 23.0 | 3.0 | 70.0 | 4.0 | 18.853 | O | 1 |
| 5567 | 20.0 | 6.0 | 70.0 | 4.0 | 17.783 | O | 1 |
| 5568 | 10.0 | 16.0 | 70.0 | 4.0 | 14.214 | O | 1 |
| 5569 | 9.0 | 17.0 | 70.0 | 4.0 | 13.855 | O | 1 |
| 5570 | 8.0 | 18.0 | 70.0 | 4.0 | 13.437 | O | 1 |
| 5571 | 7.0 | 19.0 | 70.0 | 4.0 | 13.019 | O | 1 |
| 5572 | 6.0 | 20.0 | 70.0 | 4.0 | 12.601 | O | 1 |
| 5573 | 5.0 | 21.0 | 70.0 | 4.0 | 12.183 | O | 1 |
| 5574 | 4.0 | 22.0 | 70.0 | 4.0 | 11.765 | O | 1 |
| 5575 | 3.0 | 23.0 | 70.0 | 4.0 | 11.347 | O | 1 |
| 5576 | 2.0 | 24.0 | 70.0 | 4.0 | 10.929 | O | 1 |
| 5577 | 1.0 | 25.0 | 70.0 | 4.0 | 10.511 | O | 1 |
| 5578 | 0.0 | 26.0 | 70.0 | 4.0 | 10.094 | O | 1 |
| 5579 | 26.0 | 63.0 | 5.0 | 6.0 | 19.321 | X | 1 |
| 5580 | 25.1 | 63.9 | 5.0 | 6.0 | 19.000 | **X** | 1 |
| 5581 | 25.0 | 64.0 | 5.0 | 6.0 | 18.964 | O | 1 |
| 5582 | 20.0 | 69.0 | 5.0 | 6.0 | 17.180 | O | 1 |
| 5583 | 10.0 | 79.0 | 5.0 | 6.0 | 13.552 | O | 1 |

[Table 92]

| | | | | | | |
|---|---|---|---|---|---|---|
| 5584 | 9.0 | 80.0 | 5.0 | 6.0 | 13.134 | O | 1 |
| 5585 | 8.0 | 81.0 | 5.0 | 6.0 | 12.717 | O | 1 |
| 5586 | 7.0 | 82.0 | 5.0 | 6.0 | 12.299 | O | 1 |
| 5587 | 6.0 | 83.0 | 5.0 | 6.0 | 11.881 | O | 1 |
| 5588 | 5.0 | 84.0 | 5.0 | 6.0 | 11.463 | O | 1 |
| 5589 | 4.0 | 85.0 | 5.0 | 6.0 | 11.045 | O | 1 |
| 5590 | 3.0 | 86.0 | 5.0 | 6.0 | 10.627 | O | 1 |
| 5591 | 2.0 | 87.0 | 5.0 | 6.0 | 10.209 | O | 1 |
| 5592 | 1.0 | 88.0 | 5.0 | 6.0 | 9.791 | O | 1 |
| 5593 | 0.0 | 89.0 | 5.0 | 6.0 | 9.373 | O | 1 |
| 5594 | 26.0 | 58.0 | 10.0 | 6.0 | 19.351 | X | 1 |
| 5595 | 25.1 | 58.9 | 10.0 | 6.0 | 19.030 | X | 1 |
| 5596 | 25.0 | 59.0 | 10.0 | 6.0 | 18.994 | O | 1 |
| 5597 | 20.0 | 64.0 | 10.0 | 6.0 | 17.210 | O | 1 |
| 5598 | 10.0 | 74.0 | 10.0 | 6.0 | 13.593 | O | 1 |
| 5599 | 9.0 | 75.0 | 10.0 | 6.0 | 13.175 | O | 1 |
| 5600 | 8.0 | 76.0 | 10.0 | 6.0 | 12.757 | O | 1 |
| 5601 | 7.0 | 77.0 | 10.0 | 6.0 | 12.339 | O | 1 |
| 5602 | 6.0 | 78.0 | 10.0 | 6.0 | 11.921 | O | 1 |
| 5603 | 5.0 | 79.0 | 10.0 | 6.0 | 11.503 | O | 1 |
| 5604 | 4.0 | 80.0 | 10.0 | 6.0 | 11.085 | O | 1 |
| 5605 | 3.0 | 81.0 | 10.0 | 6.0 | 10.667 | O | 1 |
| 5606 | 2.0 | 82.0 | 10.0 | 6.0 | 10.249 | O | 1 |
| 5607 | 1.0 | 83.0 | 10.0 | 6.0 | 9.831 | O | 1 |
| 5608 | 0.0 | 84.0 | 10.0 | 6.0 | 9.413 | O | 1 |
| 5609 | 25.0 | 54.0 | 15.0 | 6.0 | 19.024 | X | 1 |
| 5610 | 24.9 | 54.1 | 15.0 | 6.0 | 18.988 | O | 1 |
| 5611 | 24.0 | 55.0 | 15.0 | 6.0 | 18.667 | O | 1 |
| 5612 | 20.0 | 59.0 | 15.0 | 6.0 | 17.240 | O | 1 |
| 5613 | 10.0 | 69.0 | 15.0 | 6.0 | 13.633 | O | 1 |
| 5614 | 9.0 | 70.0 | 15.0 | 6.0 | 13.215 | O | 1 |
| 5615 | 8.0 | 71.0 | 15.0 | 6.0 | 12.797 | O | 1 |
| 5616 | 7.0 | 72.0 | 15.0 | 6.0 | 12.379 | O | 1 |
| 5617 | 6.0 | 73.0 | 15.0 | 6.0 | 11.961 | O | 1 |
| 5618 | 5.0 | 74.0 | 15.0 | 6.0 | 11.543 | O | 1 |
| 5619 | 4.0 | 75.0 | 15.0 | 6.0 | 11.125 | O | 1 |
| 5620 | 3.0 | 76.0 | 15.0 | 6.0 | 10.707 | O | 1 |
| 5621 | 2.0 | 77.0 | 15.0 | 6.0 | 10.289 | O | 1 |
| 5622 | 1.0 | 78.0 | 15.0 | 6.0 | 9.871 | O | 1 |
| 5623 | 0.0 | 79.0 | 15.0 | 6.0 | 9.453 | O | 1 |
| 5624 | 25.0 | 49.0 | 20.0 | 6.0 | 19.054 | X | 1 |
| 5625 | 24.9 | 49.1 | 20.0 | 6.0 | 19.018 | X | 1 |
| 5626 | 24.8 | 49.2 | 20.0 | 6.0 | 18.982 | O | 1 |
| 5627 | 24.0 | 50.0 | 20.0 | 6.0 | 18.697 | O | 1 |
| 5628 | 20.0 | 54.0 | 20.0 | 6.0 | 17.270 | O | 1 |
| 5629 | 10.0 | 64.0 | 20.0 | 6.0 | 13.673 | O | 1 |
| 5630 | 9.0 | 65.0 | 20.0 | 6.0 | 13.255 | O | 1 |
| 5631 | 8.0 | 66.0 | 20.0 | 6.0 | 12.837 | O | 1 |
| 5632 | 7.0 | 67.0 | 20.0 | 6.0 | 12.419 | O | 1 |
| 5633 | 6.0 | 68.0 | 20.0 | 6.0 | 12.001 | O | 1 |

[Table 93]

| 5634 | 5.0 | 69.0 | 20.0 | 6.0 | 11.583 | O | 1 |
|---|---|---|---|---|---|---|---|
| 5635 | 4.0 | 70.0 | 20.0 | 6.0 | 11.165 | O | 1 |
| 5636 | 3.0 | 71.0 | 20.0 | 6.0 | 10.747 | O | 1 |
| 5637 | 2.0 | 72.0 | 20.0 | 6.0 | 10.329 | O | 1 |
| 5638 | 1.0 | 73.0 | 20.0 | 6.0 | 9.912 | O | 1 |
| 5639 | 0.0 | 74.0 | 20.0 | 6.0 | 9.494 | O | 1 |
| 5640 | 25.0 | 44.0 | 25.0 | 6.0 | 19.084 | X | 1 |
| 5641 | 24.8 | 44.2 | 25.0 | 6.0 | 19.012 | X | 1 |
| 5642 | 24.7 | 44.3 | 25.0 | 6.0 | 18.977 | O | 1 |
| 5643 | 24.0 | 45.0 | 25.0 | 6.0 | 18.727 | O | 1 |
| 5644 | 20.0 | 49.0 | 25.0 | 6.0 | 17.300 | O | 1 |
| 5645 | 10.0 | 59.0 | 25.0 | 6.0 | 13.713 | O | 1 |
| 5646 | 9.0 | 60.0 | 25.0 | 6.0 | 13.295 | O | 1 |
| 5647 | 8.0 | 61.0 | 25.0 | 6.0 | 12.877 | O | 1 |
| 5648 | 7.0 | 62.0 | 25.0 | 6.0 | 12.459 | O | 1 |
| 5649 | 6.0 | 63.0 | 25.0 | 6.0 | 12.041 | O | 1 |
| 5650 | 5.0 | 64.0 | 25.0 | 6.0 | 11.623 | O | 1 |
| 5651 | 4.0 | 65.0 | 25.0 | 6.0 | 11.205 | O | 1 |
| 5652 | 3.0 | 66.0 | 25.0 | 6.0 | 10.788 | O | 1 |
| 5653 | 2.0 | 67.0 | 25.0 | 6.0 | 10.370 | O | 1 |
| 5654 | 1.0 | 68.0 | 25.0 | 6.0 | 9.952 | O | 1 |
| 5655 | 0.0 | 69.0 | 25.0 | 6.0 | 9.534 | O | 1 |
| 5656 | 25.0 | 39.0 | 30.0 | 6.0 | 19.114 | X | 1 |
| 5657 | 24.7 | 39.3 | 30.0 | 6.0 | 19.007 | X | 1 |
| 5658 | 24.6 | 39.4 | 30.0 | 6.0 | 18.971 | O | 1 |
| 5659 | 24.0 | 40.0 | 30.0 | 6.0 | 18.757 | O | 1 |
| 5660 | 20.0 | 44.0 | 30.0 | 6.0 | 17.330 | O | 1 |
| 5661 | 10.0 | 54.0 | 30.0 | 6.0 | 13.753 | O | 1 |
| 5662 | 9.0 | 55.0 | 30.0 | 6.0 | 13.335 | O | 1 |
| 5663 | 8.0 | 56.0 | 30.0 | 6.0 | 12.917 | O | 1 |
| 5664 | 7.0 | 57.0 | 30.0 | 6.0 | 12.499 | O | 1 |
| 5665 | 6.0 | 58.0 | 30.0 | 6.0 | 12.081 | O | 1 |
| 5666 | 5.0 | 59.0 | 30.0 | 6.0 | 11.663 | O | 1 |
| 5667 | 4.0 | 60.0 | 30.0 | 6.0 | 11.246 | O | 1 |
| 5668 | 3.0 | 61.0 | 30.0 | 6.0 | 10.828 | O | 1 |
| 5669 | 2.0 | 62.0 | 30.0 | 6.0 | 10.410 | O | 1 |
| 5670 | 1.0 | 63.0 | 30.0 | 6.0 | 9.992 | O | 1 |
| 5671 | 0.0 | 64.0 | 30.0 | 6.0 | 9.574 | O | 1 |
| 5672 | 25.0 | 34.0 | 35.0 | 6.0 | 19.144 | X | 1 |
| 5673 | 24.6 | 34.4 | 35.0 | 6.0 | 19.001 | X | 1 |
| 5674 | 24.5 | 34.5 | 35.0 | 6.0 | 18.965 | O | 1 |
| 5675 | 24.0 | 35.0 | 35.0 | 6.0 | 18.787 | O | 1 |
| 5676 | 20.0 | 39.0 | 35.0 | 6.0 | 17.360 | O | 1 |
| 5677 | 10.0 | 49.0 | 35.0 | 6.0 | 13.792 | O | 1 |
| 5678 | 9.0 | 50.0 | 35.0 | 6.0 | 13.375 | O | 1 |
| 5679 | 8.0 | 51.0 | 35.0 | 6.0 | 12.957 | O | 1 |
| 5680 | 7.0 | 52.0 | 35.0 | 6.0 | 12.539 | O | 1 |
| 5681 | 6.0 | 53.0 | 35.0 | 6.0 | 12.122 | O | 1 |
| 5682 | 5.0 | 54.0 | 35.0 | 6.0 | 11.704 | O | 1 |
| 5683 | 4.0 | 55.0 | 35.0 | 6.0 | 11.286 | O | 1 |

[Table 94]

| 5684 | 3.0 | 56.0 | 35.0 | 6.0 | 10.868 | O | 1 |
|---|---|---|---|---|---|---|---|
| 5685 | 2.0 | 57.0 | 35.0 | 6.0 | 10.450 | O | 1 |
| 5686 | 1.0 | 58.0 | 35.0 | 6.0 | 10.032 | O | 1 |
| 5687 | 0.0 | 59.0 | 35.0 | 6.0 | 9.614 | O | 1 |
| 5688 | 25.0 | 29.0 | 40.0 | 6.0 | 19.174 | X | 1 |
| 5689 | 24.6 | 29.4 | 40.0 | 6.0 | 19.031 | X | 1 |
| 5690 | 24.5 | 29.5 | 40.0 | 6.0 | 18.995 | O | 1 |
| 5691 | 24.0 | 30.0 | 40.0 | 6.0 | 18.817 | O | 1 |
| 5692 | 20.0 | 34.0 | 40.0 | 6.0 | 17.390 | O | 1 |
| 5693 | 10.0 | 44.0 | 40.0 | 6.0 | 13.821 | O | 1 |
| 5694 | 9.0 | 45.0 | 40.0 | 6.0 | 13.415 | O | 1 |
| 5695 | 8.0 | 46.0 | 40.0 | 6.0 | 12.997 | O | 1 |
| 5696 | 7.0 | 47.0 | 40.0 | 6.0 | 12.580 | O | 1 |
| 5697 | 6.0 | 48.0 | 40.0 | 6.0 | 12.162 | O | 1 |
| 5698 | 5.0 | 49.0 | 40.0 | 6.0 | 11.744 | O | 1 |
| 5699 | 4.0 | 50.0 | 40.0 | 6.0 | 11.326 | O | 1 |
| 5700 | 3.0 | 51.0 | 40.0 | 6.0 | 10.908 | O | 1 |
| 5701 | 2.0 | 52.0 | 40.0 | 6.0 | 10.490 | O | 1 |
| 5702 | 1.0 | 53.0 | 40.0 | 6.0 | 10.072 | O | 1 |
| 5703 | 0.0 | 54.0 | 40.0 | 6.0 | 9.654 | O | 1 |
| 5704 | 25.0 | 24.0 | 45.0 | 6.0 | 19.204 | X | 1 |
| 5705 | 24.5 | 24.5 | 45.0 | 6.0 | 19.025 | X | 1 |
| 5706 | 24.4 | 24.6 | 45.0 | 6.0 | 18.990 | O | 1 |
| 5707 | 24.0 | 25.0 | 45.0 | 6.0 | 18.847 | O | 1 |
| 5708 | 20.0 | 29.0 | 45.0 | 6.0 | 17.420 | O | 1 |
| 5709 | 10.0 | 39.0 | 45.0 | 6.0 | 13.851 | O | 1 |
| 5710 | 9.0 | 40.0 | 45.0 | 6.0 | 13.456 | O | 1 |
| 5711 | 8.0 | 41.0 | 45.0 | 6.0 | 13.038 | O | 1 |
| 5712 | 7.0 | 42.0 | 45.0 | 6.0 | 12.620 | O | 1 |
| 5713 | 6.0 | 43.0 | 45.0 | 6.0 | 12.202 | O | 1 |
| 5714 | 5.0 | 44.0 | 45.0 | 6.0 | 11.784 | O | 1 |
| 5715 | 4.0 | 45.0 | 45.0 | 6.0 | 11.366 | O | 1 |
| 5716 | 3.0 | 46.0 | 45.0 | 6.0 | 10.948 | O | 1 |
| 5717 | 2.0 | 47.0 | 45.0 | 6.0 | 10.530 | O | 1 |
| 5718 | 1.0 | 48.0 | 45.0 | 6.0 | 10.112 | O | 1 |
| 5719 | 0.0 | 49.0 | 45.0 | 6.0 | 9.694 | O | 1 |
| 5720 | 25.0 | 19.0 | 50.0 | 6.0 | 19.234 | X | 1 |
| 5721 | 24.4 | 19.6 | 50.0 | 6.0 | 19.020 | X | 1 |
| 5722 | 24.3 | 19.7 | 50.0 | 6.0 | 18.984 | O | 1 |
| 5723 | 24.0 | 20.0 | 50.0 | 6.0 | 18.877 | O | 1 |
| 5724 | 20.0 | 24.0 | 50.0 | 6.0 | 17.450 | O | 1 |
| 5725 | 10.0 | 34.0 | 50.0 | 6.0 | 13.881 | O | 1 |
| 5726 | 9.0 | 35.0 | 50.0 | 6.0 | 13.496 | O | 1 |
| 5727 | 8.0 | 36.0 | 50.0 | 6.0 | 13.078 | O | 1 |
| 5728 | 7.0 | 37.0 | 50.0 | 6.0 | 12.660 | O | 1 |
| 5729 | 6.0 | 38.0 | 50.0 | 6.0 | 12.242 | O | 1 |
| 5730 | 5.0 | 39.0 | 50.0 | 6.0 | 11.824 | O | 1 |
| 5731 | 4.0 | 40.0 | 50.0 | 6.0 | 11.406 | O | 1 |
| 5732 | 3.0 | 41.0 | 50.0 | 6.0 | 10.988 | O | 1 |
| 5733 | 2.0 | 42.0 | 50.0 | 6.0 | 10.570 | O | 1 |

[Table 95]

| 5734 | 1.0 | 43.0 | 50.0 | 6.0 | 10.152 | O | 1 |
|---|---|---|---|---|---|---|---|
| 5735 | 0.0 | 44.0 | 50.0 | 6.0 | 9.734 | O | 1 |
| 5736 | 25.0 | 14.0 | 55.0 | 6.0 | 19.264 | X | 1 |
| 5737 | 24.3 | 14.7 | 55.0 | 6.0 | 19.014 | X | 1 |
| 5738 | 24.2 | 14.8 | 55.0 | 6.0 | 18.978 | O | 1 |
| 5739 | 24.0 | 15.0 | 55.0 | 6.0 | 18.907 | O | 1 |
| 5740 | 20.0 | 19.0 | 55.0 | 6.0 | 17.480 | O | 1 |
| 5741 | 10.0 | 29.0 | 55.0 | 6.0 | 13.911 | O | 1 |
| 5742 | 9.0 | 30.0 | 55.0 | 6.0 | 13.536 | O | 1 |
| 5743 | 8.0 | 31.0 | 55.0 | 6.0 | 13.118 | O | 1 |
| 5744 | 7.0 | 32.0 | 55.0 | 6.0 | 12.700 | O | 1 |
| 5745 | 6.0 | 33.0 | 55.0 | 6.0 | 12.282 | O | 1 |
| 5746 | 5.0 | 34.0 | 55.0 | 6.0 | 11.864 | O | 1 |
| 5747 | 4.0 | 35.0 | 55.0 | 6.0 | 11.446 | O | 1 |
| 5748 | 3.0 | 36.0 | 55.0 | 6.0 | 11.028 | O | 1 |
| 5749 | 2.0 | 37.0 | 55.0 | 6.0 | 10.610 | O | 1 |
| 5750 | 1.0 | 38.0 | 55.0 | 6.0 | 10.192 | O | 1 |
| 5751 | 0.0 | 39.0 | 55.0 | 6.0 | 9.775 | O | 1 |
| 5752 | 25.0 | 9.0 | 60.0 | 6.0 | 19.294 | X | 1 |
| 5753 | 24.2 | 9.8 | 60.0 | 6.0 | 19.008 | X | 1 |
| 5754 | 24.1 | 9.9 | 60.0 | 6.0 | 18.972 | O | 1 |
| 5755 | 24.0 | 10.0 | 60.0 | 6.0 | 18.937 | O | 1 |
| 5756 | 20.0 | 14.0 | 60.0 | 6.0 | 17.510 | O | 1 |
| 5757 | 10.0 | 24.0 | 60.0 | 6.0 | 13.941 | O | 1 |
| 5758 | 9.0 | 25.0 | 60.0 | 6.0 | 13.576 | O | 1 |
| 5759 | 8.0 | 26.0 | 60.0 | 6.0 | 13.158 | O | 1 |
| 5760 | 7.0 | 27.0 | 60.0 | 6.0 | 12.740 | O | 1 |
| 5761 | 6.0 | 28.0 | 60.0 | 6.0 | 12.322 | O | 1 |
| 5762 | 5.0 | 29.0 | 60.0 | 6.0 | 11.904 | O | 1 |
| 5763 | 4.0 | 30.0 | 60.0 | 6.0 | 11.486 | O | 1 |
| 5764 | 3.0 | 31.0 | 60.0 | 6.0 | 11.068 | O | 1 |
| 5765 | 2.0 | 32.0 | 60.0 | 6.0 | 10.651 | O | 1 |
| 5766 | 1.0 | 33.0 | 60.0 | 6.0 | 10.233 | O | 1 |
| 5767 | 0.0 | 34.0 | 60.0 | 6.0 | 9.815 | O | 1 |
| 5768 | 25.0 | 4.0 | 65.0 | 6.0 | 19.324 | X | 1 |
| 5769 | 24.1 | 4.9 | 65.0 | 6.0 | 19.002 | X | 1 |
| 5770 | 24.0 | 5.0 | 65.0 | 6.0 | 18.967 | O | 1 |
| 5771 | 20.0 | 9.0 | 65.0 | 6.0 | 17.539 | O | 1 |
| 5772 | 10.0 | 19.0 | 65.0 | 6.0 | 13.971 | O | 1 |
| 5773 | 9.0 | 20.0 | 65.0 | 6.0 | 13.615 | O | 1 |
| 5774 | 8.0 | 21.0 | 65.0 | 6.0 | 13.198 | O | 1 |
| 5775 | 7.0 | 22.0 | 65.0 | 6.0 | 12.780 | O | 1 |
| 5776 | 6.0 | 23.0 | 65.0 | 6.0 | 12.362 | O | 1 |
| 5777 | 5.0 | 24.0 | 65.0 | 6.0 | 11.944 | O | 1 |
| 5778 | 4.0 | 25.0 | 65.0 | 6.0 | 11.526 | O | 1 |
| 5779 | 3.0 | 26.0 | 65.0 | 6.0 | 11.109 | O | 1 |
| 5780 | 2.0 | 27.0 | 65.0 | 6.0 | 10.691 | O | 1 |
| 5781 | 1.0 | 28.0 | 65.0 | 6.0 | 10.273 | O | 1 |
| 5782 | 0.0 | 29.0 | 65.0 | 6.0 | 9.855 | O | 1 |
| 5783 | 26.0 | 61.0 | 5.0 | 8.0 | 19.108 | X | 1 |

[Table 96]

| 5784 | 25.7 | 61.3 | 5.0 | 8.0 | 19.001 | X | 1 |
|------|------|------|------|------|--------|---|---|
| 5785 | 25.6 | 61.4 | 5.0 | 8.0 | 18.965 | O | 1 |
| 5786 | 25.0 | 62.0 | 5.0 | 8.0 | 18.751 | O | 1 |
| 5787 | 20.0 | 67.0 | 5.0 | 8.0 | 16.967 | O | 1 |
| 5788 | 10.0 | 77.0 | 5.0 | 8.0 | 13.354 | O | 1 |
| 5789 | 9.0 | 78.0 | 5.0 | 8.0 | 12.936 | O | 1 |
| 5790 | 8.0 | 79.0 | 5.0 | 8.0 | 12.518 | O | 1 |
| 5791 | 7.0 | 80.0 | 5.0 | 8.0 | 12.100 | O | 1 |
| 5792 | 6.0 | 81.0 | 5.0 | 8.0 | 11.682 | O | 1 |
| 5793 | 5.0 | 82.0 | 5.0 | 8.0 | 11.264 | O | 1 |
| 5794 | 4.0 | 83.0 | 5.0 | 8.0 | 10.846 | O | 1 |
| 5795 | 3.0 | 84.0 | 5.0 | 8.0 | 10.428 | O | 1 |
| 5796 | 2.0 | 85.0 | 5.0 | 8.0 | 10.010 | O | 1 |
| 5797 | 1.0 | 86.0 | 5.0 | 8.0 | 9.593 | O | 1 |
| 5798 | 0.0 | 87.0 | 5.0 | 8.0 | 9.175 | O | 1 |
| 5799 | 26.0 | 56.0 | 10.0 | 8.0 | 19.138 | X | 1 |
| 5800 | 25.7 | 56.3 | 10.0 | 8.0 | 19.031 | X | 1 |
| 5801 | 25.6 | 56.4 | 10.0 | 8.0 | 18.995 | O | 1 |
| 5802 | 25.0 | 57.0 | 10.0 | 8.0 | 18.781 | O | 1 |
| 5803 | 20.0 | 62.0 | 10.0 | 8.0 | 16.997 | O | 1 |
| 5804 | 10.0 | 72.0 | 10.0 | 8.0 | 13.394 | O | 1 |
| 5805 | 9.0 | 73.0 | 10.0 | 8.0 | 12.976 | O | 1 |
| 5806 | 8.0 | 74.0 | 10.0 | 8.0 | 12.558 | O | 1 |
| 5807 | 7.0 | 75.0 | 10.0 | 8.0 | 12.140 | O | 1 |
| 5808 | 6.0 | 76.0 | 10.0 | 8.0 | 11.722 | O | 1 |
| 5809 | 5.0 | 77.0 | 10.0 | 8.0 | 11.304 | O | 1 |
| 5810 | 4.0 | 78.0 | 10.0 | 8.0 | 10.886 | O | 1 |
| 5811 | 3.0 | 79.0 | 10.0 | 8.0 | 10.469 | O | 1 |
| 5812 | 2.0 | 80.0 | 10.0 | 8.0 | 10.051 | O | 1 |
| 5813 | 1.0 | 81.0 | 10.0 | 8.0 | 9.633 | O | 1 |
| 5814 | 0.0 | 82.0 | 10.0 | 8.0 | 9.215 | O | 1 |
| 5815 | 26.0 | 51.0 | 15.0 | 8.0 | 19.168 | X | 1 |
| 5816 | 25.6 | 51.4 | 15.0 | 8.0 | 19.025 | X | 1 |
| 5817 | 25.5 | 51.5 | 15.0 | 8.0 | 18.989 | O | 1 |
| 5818 | 25.0 | 52.0 | 15.0 | 8.0 | 18.811 | O | 1 |
| 5819 | 20.0 | 57.0 | 15.0 | 8.0 | 17.027 | O | 1 |
| 5820 | 10.0 | 67.0 | 15.0 | 8.0 | 13.434 | O | 1 |
| 5821 | 9.0 | 68.0 | 15.0 | 8.0 | 13.016 | O | 1 |
| 5822 | 8.0 | 69.0 | 15.0 | 8.0 | 12.598 | O | 1 |
| 5823 | 7.0 | 70.0 | 15.0 | 8.0 | 12.180 | O | 1 |
| 5824 | 6.0 | 71.0 | 15.0 | 8.0 | 11.762 | O | 1 |
| 5825 | 5.0 | 72.0 | 15.0 | 8.0 | 11.344 | O | 1 |
| 5826 | 4.0 | 73.0 | 15.0 | 8.0 | 10.927 | O | 1 |
| 5827 | 3.0 | 74.0 | 15.0 | 8.0 | 10.509 | O | 1 |
| 5828 | 2.0 | 75.0 | 15.0 | 8.0 | 10.091 | O | 1 |
| 5829 | 1.0 | 76.0 | 15.0 | 8.0 | 9.673 | O | 1 |
| 5830 | 0.0 | 77.0 | 15.0 | 8.0 | 9.255 | O | 1 |
| 5831 | 26.0 | 46.0 | 20.0 | 8.0 | 19.198 | X | 1 |
| 5832 | 25.5 | 46.5 | 20.0 | 8.0 | 19.019 | X | 1 |
| 5833 | 25.4 | 46.6 | 20.0 | 8.0 | 18.983 | O | 1 |

[Table 97]

| 5834 | 25.0 | 47.0 | 20.0 | 8.0 | 18.841 | O | 1 |
|------|------|------|------|-----|--------|---|---|
| 5835 | 20.0 | 52.0 | 20.0 | 8.0 | 17.057 | O | 1 |
| 5836 | 10.0 | 62.0 | 20.0 | 8.0 | 13.474 | O | 1 |
| 5837 | 9.0 | 63.0 | 20.0 | 8.0 | 13.056 | O | 1 |
| 5838 | 8.0 | 64.0 | 20.0 | 8.0 | 12.638 | O | 1 |
| 5839 | 7.0 | 65.0 | 20.0 | 8.0 | 12.220 | O | 1 |
| 5840 | 6.0 | 66.0 | 20.0 | 8.0 | 11.803 | O | 1 |
| 5841 | 5.0 | 67.0 | 20.0 | 8.0 | 11.385 | O | 1 |
| 5842 | 4.0 | 68.0 | 20.0 | 8.0 | 10.967 | O | 1 |
| 5843 | 3.0 | 69.0 | 20.0 | 8.0 | 10.549 | O | 1 |
| 5844 | 2.0 | 70.0 | 20.0 | 8.0 | 10.131 | O | 1 |
| 5845 | 1.0 | 71.0 | 20.0 | 8.0 | 9.713 | O | 1 |
| 5846 | 0.0 | 72.0 | 20.0 | 8.0 | 9.295 | O | 1 |
| 5847 | 26.0 | 41.0 | 25.0 | 8.0 | 19.228 | X | 1 |
| 5848 | 25.4 | 41.6 | 25.0 | 8.0 | 19.013 | X | 1 |
| 5849 | 25.3 | 41.7 | 25.0 | 8.0 | 18.978 | O | 1 |
| 5850 | 25.0 | 42.0 | 25.0 | 8.0 | 18.871 | O | 1 |
| 5851 | 20.0 | 47.0 | 25.0 | 8.0 | 17.087 | O | 1 |
| 5852 | 10.0 | 57.0 | 25.0 | 8.0 | 13.514 | O | 1 |
| 5853 | 9.0 | 58.0 | 25.0 | 8.0 | 13.096 | O | 1 |
| 5854 | 8.0 | 59.0 | 25.0 | 8.0 | 12.679 | O | 1 |
| 5855 | 7.0 | 60.0 | 25.0 | 8.0 | 12.261 | O | 1 |
| 5856 | 6.0 | 61.0 | 25.0 | 8.0 | 11.843 | O | 1 |
| 5857 | 5.0 | 62.0 | 25.0 | 8.0 | 11.425 | O | 1 |
| 5858 | 4.0 | 63.0 | 25.0 | 8.0 | 11.007 | O | 1 |
| 5859 | 3.0 | 64.0 | 25.0 | 8.0 | 10.589 | O | 1 |
| 5860 | 2.0 | 65.0 | 25.0 | 8.0 | 10.171 | O | 1 |
| 5861 | 1.0 | 66.0 | 25.0 | 8.0 | 9.753 | O | 1 |
| 5862 | 0.0 | 67.0 | 25.0 | 8.0 | 9.335 | O | 1 |
| 5863 | 26.0 | 36.0 | 30.0 | 8.0 | 19.258 | X | 1 |
| 5864 | 25.3 | 36.7 | 30.0 | 8.0 | 19.008 | X | 1 |
| 5865 | 25.2 | 36.8 | 30.0 | 8.0 | 18.972 | O | 1 |
| 5866 | 25.0 | 37.0 | 30.0 | 8.0 | 18.901 | O | 1 |
| 5867 | 20.0 | 42.0 | 30.0 | 8.0 | 17.117 | O | 1 |
| 5868 | 10.0 | 52.0 | 30.0 | 8.0 | 13.548 | O | 1 |
| 5869 | 9.0 | 53.0 | 30.0 | 8.0 | 13.137 | O | 1 |
| 5870 | 8.0 | 54.0 | 30.0 | 8.0 | 12.719 | O | 1 |
| 5871 | 7.0 | 55.0 | 30.0 | 8.0 | 12.301 | O | 1 |
| 5872 | 6.0 | 56.0 | 30.0 | 8.0 | 11.883 | O | 1 |
| 5873 | 5.0 | 57.0 | 30.0 | 8.0 | 11.465 | O | 1 |
| 5874 | 4.0 | 58.0 | 30.0 | 8.0 | 11.047 | O | 1 |
| 5875 | 3.0 | 59.0 | 30.0 | 8.0 | 10.629 | O | 1 |
| 5876 | 2.0 | 60.0 | 30.0 | 8.0 | 10.211 | O | 1 |
| 5877 | 1.0 | 61.0 | 30.0 | 8.0 | 9.793 | O | 1 |
| 5878 | 0.0 | 62.0 | 30.0 | 8.0 | 9.375 | O | 1 |
| 5879 | 26.0 | 31.0 | 35.0 | 8.0 | 19.287 | X | 1 |
| 5880 | 25.2 | 31.8 | 35.0 | 8.0 | 19.002 | X | 1 |
| 5881 | 25.1 | 31.9 | 35.0 | 8.0 | 18.966 | O | 1 |
| 5882 | 25.0 | 32.0 | 35.0 | 8.0 | 18.931 | O | 1 |
| 5883 | 20.0 | 37.0 | 35.0 | 8.0 | 17.147 | O | 1 |

[Table 98]

| | | | | | | | |
|---|---|---|---|---|---|---|---|
| 5884 | 10.0 | 47.0 | 35.0 | 8.0 | 13.578 | O | 1 |
| 5885 | 9.0 | 48.0 | 35.0 | 8.0 | 13.177 | O | 1 |
| 5886 | 8.0 | 49.0 | 35.0 | 8.0 | 12.759 | O | 1 |
| 5887 | 7.0 | 50.0 | 35.0 | 8.0 | 12.341 | O | 1 |
| 5888 | 6.0 | 51.0 | 35.0 | 8.0 | 11.923 | O | 1 |
| 5889 | 5.0 | 52.0 | 35.0 | 8.0 | 11.505 | O | 1 |
| 5890 | 4.0 | 53.0 | 35.0 | 8.0 | 11.087 | O | 1 |
| 5891 | 3.0 | 54.0 | 35.0 | 8.0 | 10.669 | O | 1 |
| 5892 | 2.0 | 55.0 | 35.0 | 8.0 | 10.251 | O | 1 |
| 5893 | 1.0 | 56.0 | 35.0 | 8.0 | 9.833 | O | 1 |
| 5894 | 0.0 | 57.0 | 35.0 | 8.0 | 9.415 | O | 1 |
| 5895 | 26.0 | 26.0 | 40.0 | 8.0 | 19.317 | X | 1 |
| 5896 | 25.2 | 26.8 | 40.0 | 8.0 | 19.032 | X | 1 |
| 5897 | 25.1 | 26.9 | 40.0 | 8.0 | 18.996 | O | 1 |
| 5898 | 25.0 | 27.0 | 40.0 | 8.0 | 18.961 | O | 1 |
| 5899 | 20.0 | 32.0 | 40.0 | 8.0 | 17.177 | O | 1 |
| 5900 | 10.0 | 42.0 | 40.0 | 8.0 | 13.608 | O | 1 |
| 5901 | 9.0 | 43.0 | 40.0 | 8.0 | 13.217 | O | 1 |
| 5902 | 8.0 | 44.0 | 40.0 | 8.0 | 12.799 | O | 1 |
| 5903 | 7.0 | 45.0 | 40.0 | 8.0 | 12.381 | O | 1 |
| 5904 | 6.0 | 46.0 | 40.0 | 8.0 | 11.963 | O | 1 |
| 5905 | 5.0 | 47.0 | 40.0 | 8.0 | 11.545 | O | 1 |
| 5906 | 4.0 | 48.0 | 40.0 | 8.0 | 11.127 | O | 1 |
| 5907 | 3.0 | 49.0 | 40.0 | 8.0 | 10.709 | O | 1 |
| 5908 | 2.0 | 50.0 | 40.0 | 8.0 | 10.291 | O | 1 |
| 5909 | 1.0 | 51.0 | 40.0 | 8.0 | 9.873 | O | 1 |
| 5910 | 0.0 | 52.0 | 40.0 | 8.0 | 9.456 | O | 1 |
| 5911 | 26.0 | 21.0 | 45.0 | 8.0 | 19.347 | X | 1 |
| 5912 | 25.1 | 21.9 | 45.0 | 8.0 | 19.026 | X | 1 |
| 5913 | 25.0 | 22.0 | 45.0 | 8.0 | 18.991 | O | 1 |
| 5914 | 20.0 | 27.0 | 45.0 | 8.0 | 17.207 | O | 1 |
| 5915 | 10.0 | 37.0 | 45.0 | 8.0 | 13.638 | O | 1 |
| 5916 | 9.0 | 38.0 | 45.0 | 8.0 | 13.257 | O | 1 |
| 5917 | 8.0 | 39.0 | 45.0 | 8.0 | 12.839 | O | 1 |
| 5918 | 7.0 | 40.0 | 45.0 | 8.0 | 12.421 | O | 1 |
| 5919 | 6.0 | 41.0 | 45.0 | 8.0 | 12.003 | O | 1 |
| 5920 | 5.0 | 42.0 | 45.0 | 8.0 | 11.585 | O | 1 |
| 5921 | 4.0 | 43.0 | 45.0 | 8.0 | 11.167 | O | 1 |
| 5922 | 3.0 | 44.0 | 45.0 | 8.0 | 10.749 | O | 1 |
| 5923 | 2.0 | 45.0 | 45.0 | 8.0 | 10.332 | O | 1 |
| 5924 | 1.0 | 46.0 | 45.0 | 8.0 | 9.914 | O | 1 |
| 5925 | 0.0 | 47.0 | 45.0 | 8.0 | 9.496 | O | 1 |
| 5926 | 25.0 | 17.0 | 50.0 | 8.0 | 19.021 | X | 1 |
| 5927 | 24.9 | 17.1 | 50.0 | 8.0 | 18.985 | O | 1 |
| 5928 | 24.0 | 18.0 | 50.0 | 8.0 | 18.664 | O | 1 |
| 5929 | 20.0 | 22.0 | 50.0 | 8.0 | 17.237 | O | 1 |
| 5930 | 10.0 | 32.0 | 50.0 | 8.0 | 13.668 | O | 1 |
| 5931 | 9.0 | 33.0 | 50.0 | 8.0 | 13.297 | O | 1 |
| 5932 | 8.0 | 34.0 | 50.0 | 8.0 | 12.879 | O | 1 |
| 5933 | 7.0 | 35.0 | 50.0 | 8.0 | 12.461 | O | 1 |

[Table 99]

| 5934 | 6.0 | 36.0 | 50.0 | 8.0 | 12.043 | O | 1 |
|---|---|---|---|---|---|---|---|
| 5935 | 5.0 | 37.0 | 50.0 | 8.0 | 11.625 | O | 1 |
| 5936 | 4.0 | 38.0 | 50.0 | 8.0 | 11.208 | O | 1 |
| 5937 | 3.0 | 39.0 | 50.0 | 8.0 | 10.790 | O | 1 |
| 5938 | 2.0 | 40.0 | 50.0 | 8.0 | 10.372 | O | 1 |
| 5939 | 1.0 | 41.0 | 50.0 | 8.0 | 9.954 | O | 1 |
| 5940 | 0.0 | 42.0 | 50.0 | 8.0 | 9.536 | O | 1 |
| 5941 | 25.0 | 12.0 | 55.0 | 8.0 | 19.051 | X | 1 |
| 5942 | 24.9 | 12.1 | 55.0 | 8.0 | 19.015 | X | 1 |
| 5943 | 24.8 | 12.2 | 55.0 | 8.0 | 18.979 | O | 1 |
| 5944 | 24.0 | 13.0 | 55.0 | 8.0 | 18.694 | O | 1 |
| 5945 | 20.0 | 17.0 | 55.0 | 8.0 | 17.266 | O | 1 |
| 5946 | 10.0 | 27.0 | 55.0 | 8.0 | 13.698 | O | 1 |
| 5947 | 9.0 | 28.0 | 55.0 | 8.0 | 13.337 | O | 1 |
| 5948 | 8.0 | 29.0 | 55.0 | 8.0 | 12.919 | O | 1 |
| 5949 | 7.0 | 30.0 | 55.0 | 8.0 | 12.501 | O | 1 |
| 5950 | 6.0 | 31.0 | 55.0 | 8.0 | 12.083 | O | 1 |
| 5951 | 5.0 | 32.0 | 55.0 | 8.0 | 11.666 | O | 1 |
| 5952 | 4.0 | 33.0 | 55.0 | 8.0 | 11.248 | O | 1 |
| 5953 | 3.0 | 34.0 | 55.0 | 8.0 | 10.830 | O | 1 |
| 5954 | 2.0 | 35.0 | 55.0 | 8.0 | 10.412 | O | 1 |
| 5955 | 1.0 | 36.0 | 55.0 | 8.0 | 9.994 | O | 1 |
| 5956 | 0.0 | 37.0 | 55.0 | 8.0 | 9.576 | O | 1 |
| 5957 | 25.0 | 7.0 | 60.0 | 8.0 | 19.081 | X | 1 |
| 5958 | 24.8 | 7.2 | 60.0 | 8.0 | 19.009 | X | 1 |
| 5959 | 24.7 | 7.3 | 60.0 | 8.0 | 18.973 | O | 1 |
| 5960 | 24.0 | 8.0 | 60.0 | 8.0 | 18.724 | O | 1 |
| 5961 | 20.0 | 12.0 | 60.0 | 8.0 | 17.296 | O | 1 |
| 5962 | 10.0 | 22.0 | 60.0 | 8.0 | 13.728 | O | 1 |
| 5963 | 9.0 | 23.0 | 60.0 | 8.0 | 13.372 | O | 1 |
| 5964 | 8.0 | 24.0 | 60.0 | 8.0 | 12.959 | O | 1 |
| 5965 | 7.0 | 25.0 | 60.0 | 8.0 | 12.542 | O | 1 |
| 5966 | 6.0 | 26.0 | 60.0 | 8.0 | 12.124 | O | 1 |
| 5967 | 5.0 | 27.0 | 60.0 | 8.0 | 11.706 | O | 1 |
| 5968 | 4.0 | 28.0 | 60.0 | 8.0 | 11.288 | O | 1 |
| 5969 | 3.0 | 29.0 | 60.0 | 8.0 | 10.870 | O | 1 |
| 5970 | 2.0 | 30.0 | 60.0 | 8.0 | 10.452 | O | 1 |
| 5971 | 1.0 | 31.0 | 60.0 | 8.0 | 10.034 | O | 1 |
| 5972 | 0.0 | 32.0 | 60.0 | 8.0 | 9.616 | O | 1 |
| 5973 | 25.0 | 2.0 | 65.0 | 8.0 | 19.111 | X | 1 |
| 5974 | 24.7 | 2.3 | 65.0 | 8.0 | 19.003 | X | 1 |
| 5975 | 24.6 | 2.4 | 65.0 | 8.0 | 18.968 | O | 1 |
| 5976 | 24.0 | 3.0 | 65.0 | 8.0 | 18.754 | O | 1 |
| 5977 | 20.0 | 7.0 | 65.0 | 8.0 | 17.326 | O | 1 |
| 5978 | 10.0 | 17.0 | 65.0 | 8.0 | 13.758 | O | 1 |
| 5979 | 9.0 | 18.0 | 65.0 | 8.0 | 13.401 | O | 1 |
| 5980 | 8.0 | 19.0 | 65.0 | 8.0 | 13.000 | O | 1 |
| 5981 | 7.0 | 20.0 | 65.0 | 8.0 | 12.582 | O | 1 |
| 5982 | 6.0 | 21.0 | 65.0 | 8.0 | 12.164 | O | 1 |
| 5983 | 5.0 | 22.0 | 65.0 | 8.0 | 11.746 | O | 1 |

[Table 100]

| 5984 | 4.0 | 23.0 | 65.0 | 8.0 | 11.328 | O | 1 |
|------|-----|------|------|-----|--------|---|---|
| 5985 | 3.0 | 24.0 | 65.0 | 8.0 | 10.910 | O | 1 |
| 5986 | 2.0 | 25.0 | 65.0 | 8.0 | 10.492 | O | 1 |
| 5987 | 1.0 | 26.0 | 65.0 | 8.0 | 10.074 | O | 1 |
| 5988 | 0.0 | 27.0 | 65.0 | 8.0 | 9.656 | O | 1 |
| 5989 | 27.0 | 58.0 | 5.0 | 10.0 | 19.251 | X | 1 |
| 5990 | 26.3 | 58.7 | 5.0 | 10.0 | 19.002 | X | 1 |
| 5991 | 26.2 | 58.8 | 5.0 | 10.0 | 18.966 | O | 1 |
| 5992 | 26.0 | 59.0 | 5.0 | 10.0 | 18.895 | O | 1 |
| 5993 | 20.0 | 65.0 | 5.0 | 10.0 | 16.754 | O | 1 |
| 5994 | 10.0 | 75.0 | 5.0 | 10.0 | 13.155 | O | 1 |
| 5995 | 9.0 | 76.0 | 5.0 | 10.0 | 12.737 | O | 1 |
| 5996 | 8.0 | 77.0 | 5.0 | 10.0 | 12.319 | O | 1 |
| 5997 | 7.0 | 78.0 | 5.0 | 10.0 | 11.901 | O | 1 |
| 5998 | 6.0 | 79.0 | 5.0 | 10.0 | 11.484 | O | 1 |
| 5999 | 5.0 | 80.0 | 5.0 | 10.0 | 11.066 | O | 1 |
| 6000 | 4.0 | 81.0 | 5.0 | 10.0 | 10.648 | O | 1 |
| 6001 | 3.0 | 82.0 | 5.0 | 10.0 | 10.230 | O | 1 |
| 6002 | 2.0 | 83.0 | 5.0 | 10.0 | 9.812 | O | 1 |
| 6003 | 1.0 | 84.0 | 5.0 | 10.0 | 9.394 | O | 1 |
| 6004 | 0.0 | 85.0 | 5.0 | 10.0 | 8.976 | O | 1 |
| 6005 | 27.0 | 53.0 | 10.0 | 10.0 | 19.281 | X | 1 |
| 6006 | 26.3 | 53.7 | 10.0 | 10.0 | 19.032 | X | 1 |
| 6007 | 26.2 | 53.8 | 10.0 | 10.0 | 18.996 | O | 1 |
| 6008 | 26.0 | 54.0 | 10.0 | 10.0 | 18.925 | O | 1 |
| 6009 | 20.0 | 60.0 | 10.0 | 10.0 | 16.784 | O | 1 |
| 6010 | 10.0 | 70.0 | 10.0 | 10.0 | 13.195 | O | 1 |
| 6011 | 9.0 | 71.0 | 10.0 | 10.0 | 12.777 | O | 1 |
| 6012 | 8.0 | 72.0 | 10.0 | 10.0 | 12.360 | O | 1 |
| 6013 | 7.0 | 73.0 | 10.0 | 10.0 | 11.942 | O | 1 |
| 6014 | 6.0 | 74.0 | 10.0 | 10.0 | 11.524 | O | 1 |
| 6015 | 5.0 | 75.0 | 10.0 | 10.0 | 11.106 | O | 1 |
| 6016 | 4.0 | 76.0 | 10.0 | 10.0 | 10.688 | O | 1 |
| 6017 | 3.0 | 77.0 | 10.0 | 10.0 | 10.270 | O | 1 |
| 6018 | 2.0 | 78.0 | 10.0 | 10.0 | 9.852 | O | 1 |
| 6019 | 1.0 | 79.0 | 10.0 | 10.0 | 9.434 | O | 1 |
| 6020 | 0.0 | 80.0 | 10.0 | 10.0 | 9.016 | O | 1 |
| 6021 | 27.0 | 48.0 | 15.0 | 10.0 | 19.311 | X | 1 |
| 6022 | 26.2 | 48.8 | 15.0 | 10.0 | 19.026 | X | 1 |
| 6023 | 26.1 | 48.9 | 15.0 | 10.0 | 18.990 | O | 1 |
| 6024 | 26.0 | 49.0 | 15.0 | 10.0 | 18.955 | O | 1 |
| 6025 | 20.0 | 55.0 | 15.0 | 10.0 | 16.814 | O | 1 |
| 6026 | 10.0 | 65.0 | 15.0 | 10.0 | 13.236 | O | 1 |
| 6027 | 9.0 | 66.0 | 15.0 | 10.0 | 12.818 | O | 1 |
| 6028 | 8.0 | 67.0 | 15.0 | 10.0 | 12.400 | O | 1 |
| 6029 | 7.0 | 68.0 | 15.0 | 10.0 | 11.982 | O | 1 |
| 6030 | 6.0 | 69.0 | 15.0 | 10.0 | 11.564 | O | 1 |
| 6031 | 5.0 | 70.0 | 15.0 | 10.0 | 11.146 | O | 1 |
| 6032 | 4.0 | 71.0 | 15.0 | 10.0 | 10.728 | O | 1 |
| 6033 | 3.0 | 72.0 | 15.0 | 10.0 | 10.310 | O | 1 |

[Table 101]

| 6034 | 2.0 | 73.0 | 15.0 | 10.0 | 9.892 | O | 1 |
|---|---|---|---|---|---|---|---|
| 6035 | 1.0 | 74.0 | 15.0 | 10.0 | 9.474 | O | 1 |
| 6036 | 0.0 | 75.0 | 15.0 | 10.0 | 9.056 | O | 1 |
| 6037 | 27.0 | 43.0 | 20.0 | 10.0 | 19.341 | X | 1 |
| 6038 | 26.1 | 43.9 | 20.0 | 10.0 | 19.020 | X | 1 |
| 6039 | 26.0 | 44.0 | 20.0 | 10.0 | 18.985 | O | 1 |
| 6040 | 20.0 | 50.0 | 20.0 | 10.0 | 16.844 | O | 1 |
| 6041 | 10.0 | 60.0 | 20.0 | 10.0 | 13.275 | O | 1 |
| 6042 | 9.0 | 61.0 | 20.0 | 10.0 | 12.858 | O | 1 |
| 6043 | 8.0 | 62.0 | 20.0 | 10.0 | 12.440 | O | 1 |
| 6044 | 7.0 | 63.0 | 20.0 | 10.0 | 12.022 | O | 1 |
| 6045 | 6.0 | 64.0 | 20.0 | 10.0 | 11.604 | O | 1 |
| 6046 | 5.0 | 65.0 | 20.0 | 10.0 | 11.186 | O | 1 |
| 6047 | 4.0 | 66.0 | 20.0 | 10.0 | 10.768 | O | 1 |
| 6048 | 3.0 | 67.0 | 20.0 | 10.0 | 10.350 | O | 1 |
| 6049 | 2.0 | 68.0 | 20.0 | 10.0 | 9.932 | O | 1 |
| 6050 | 1.0 | 69.0 | 20.0 | 10.0 | 9.514 | O | 1 |
| 6051 | 0.0 | 70.0 | 20.0 | 10.0 | 9.096 | O | 1 |
| 6052 | 26.0 | 39.0 | 25.0 | 10.0 | 19.014 | X | 1 |
| 6053 | 25.9 | 39.1 | 25.0 | 10.0 | 18.979 | O | 1 |
| 6054 | 25.0 | 40.0 | 25.0 | 10.0 | 18.658 | O | 1 |
| 6055 | 20.0 | 45.0 | 25.0 | 10.0 | 16.874 | O | 1 |
| 6056 | 10.0 | 55.0 | 25.0 | 10.0 | 13.305 | O | 1 |
| 6057 | 9.0 | 56.0 | 25.0 | 10.0 | 12.898 | O | 1 |
| 6058 | 8.0 | 57.0 | 25.0 | 10.0 | 12.480 | O | 1 |
| 6059 | 7.0 | 58.0 | 25.0 | 10.0 | 12.062 | O | 1 |
| 6060 | 6.0 | 59.0 | 25.0 | 10.0 | 11.644 | O | 1 |
| 6061 | 5.0 | 60.0 | 25.0 | 10.0 | 11.226 | O | 1 |
| 6062 | 4.0 | 61.0 | 25.0 | 10.0 | 10.808 | O | 1 |
| 6063 | 3.0 | 62.0 | 25.0 | 10.0 | 10.390 | O | 1 |
| 6064 | 2.0 | 63.0 | 25.0 | 10.0 | 9.972 | O | 1 |
| 6065 | 1.0 | 64.0 | 25.0 | 10.0 | 9.555 | O | 1 |
| 6066 | 0.0 | 65.0 | 25.0 | 10.0 | 9.137 | O | 1 |
| 6067 | 26.0 | 34.0 | 30.0 | 10.0 | 19.044 | X | 1 |
| 6068 | 25.9 | 34.1 | 30.0 | 10.0 | 19.009 | X | 1 |
| 6069 | 25.8 | 34.2 | 30.0 | 10.0 | 18.973 | O | 1 |
| 6070 | 25.0 | 35.0 | 30.0 | 10.0 | 18.688 | O | 1 |
| 6071 | 20.0 | 40.0 | 30.0 | 10.0 | 16.904 | O | 1 |
| 6072 | 10.0 | 50.0 | 30.0 | 10.0 | 13.335 | O | 1 |
| 6073 | 9.0 | 51.0 | 30.0 | 10.0 | 12.938 | O | 1 |
| 6074 | 8.0 | 52.0 | 30.0 | 10.0 | 12.520 | O | 1 |
| 6075 | 7.0 | 53.0 | 30.0 | 10.0 | 12.102 | O | 1 |
| 6076 | 6.0 | 54.0 | 30.0 | 10.0 | 11.684 | O | 1 |
| 6077 | 5.0 | 55.0 | 30.0 | 10.0 | 11.266 | O | 1 |
| 6078 | 4.0 | 56.0 | 30.0 | 10.0 | 10.848 | O | 1 |
| 6079 | 3.0 | 57.0 | 30.0 | 10.0 | 10.430 | O | 1 |
| 6080 | 2.0 | 58.0 | 30.0 | 10.0 | 10.013 | O | 1 |
| 6081 | 1.0 | 59.0 | 30.0 | 10.0 | 9.595 | O | 1 |
| 6082 | 0.0 | 60.0 | 30.0 | 10.0 | 9.177 | O | 1 |
| 6083 | 26.0 | 29.0 | 35.0 | 10.0 | 19.074 | X | 1 |

[Table 102]

| 6084 | 25.8 | 29.2 | 35.0 | 10.0 | 19.003 | X | 1 |
|------|------|------|------|------|--------|---|---|
| 6085 | 25.7 | 29.3 | 35.0 | 10.0 | 18.967 | O | 1 |
| 6086 | 25.0 | 30.0 | 35.0 | 10.0 | 18.718 | O | 1 |
| 6087 | 20.0 | 35.0 | 35.0 | 10.0 | 16.934 | O | 1 |
| 6088 | 10.0 | 45.0 | 35.0 | 10.0 | 13.365 | O | 1 |
| 6089 | 9.0 | 46.0 | 35.0 | 10.0 | 12.978 | O | 1 |
| 6090 | 8.0 | 47.0 | 35.0 | 10.0 | 12.560 | O | 1 |
| 6091 | 7.0 | 48.0 | 35.0 | 10.0 | 12.142 | O | 1 |
| 6092 | 6.0 | 49.0 | 35.0 | 10.0 | 11.724 | O | 1 |
| 6093 | 5.0 | 50.0 | 35.0 | 10.0 | 11.306 | O | 1 |
| 6094 | 4.0 | 51.0 | 35.0 | 10.0 | 10.889 | O | 1 |
| 6095 | 3.0 | 52.0 | 35.0 | 10.0 | 10.471 | O | 1 |
| 6096 | 2.0 | 53.0 | 35.0 | 10.0 | 10.053 | O | 1 |
| 6097 | 1.0 | 54.0 | 35.0 | 10.0 | 9.635 | O | 1 |
| 6098 | 0.0 | 55.0 | 35.0 | 10.0 | 9.217 | O | 1 |
| 6099 | 26.0 | 24.0 | 40.0 | 10.0 | 19.104 | X | 1 |
| 6100 | 25.8 | 24.2 | 40.0 | 10.0 | 19.033 | X | 1 |
| 6101 | 25.7 | 24.3 | 40.0 | 10.0 | 18.997 | O | 1 |
| 6102 | 25.0 | 25.0 | 40.0 | 10.0 | 18.748 | O | 1 |
| 6103 | 20.0 | 30.0 | 40.0 | 10.0 | 16.964 | O | 1 |
| 6104 | 10.0 | 40.0 | 40.0 | 10.0 | 13.395 | O | 1 |
| 6105 | 9.0 | 41.0 | 40.0 | 10.0 | 13.018 | O | 1 |
| 6106 | 8.0 | 42.0 | 40.0 | 10.0 | 12.600 | O | 1 |
| 6107 | 7.0 | 43.0 | 40.0 | 10.0 | 12.182 | O | 1 |
| 6108 | 6.0 | 44.0 | 40.0 | 10.0 | 11.765 | O | 1 |
| 6109 | 5.0 | 45.0 | 40.0 | 10.0 | 11.347 | O | 1 |
| 6110 | 4.0 | 46.0 | 40.0 | 10.0 | 10.929 | O | 1 |
| 6111 | 3.0 | 47.0 | 40.0 | 10.0 | 10.511 | O | 1 |
| 6112 | 2.0 | 48.0 | 40.0 | 10.0 | 10.093 | O | 1 |
| 6113 | 1.0 | 49.0 | 40.0 | 10.0 | 9.675 | O | 1 |
| 6114 | 0.0 | 50.0 | 40.0 | 10.0 | 9.257 | O | 1 |
| 6115 | 26.0 | 19.0 | 45.0 | 10.0 | 19.134 | X | 1 |
| 6116 | 25.7 | 19.3 | 45.0 | 10.0 | 19.027 | X | 1 |
| 6117 | 25.6 | 19.4 | 45.0 | 10.0 | 18.992 | O | 1 |
| 6118 | 25.0 | 20.0 | 45.0 | 10.0 | 18.778 | O | 1 |
| 6119 | 20.0 | 25.0 | 45.0 | 10.0 | 16.993 | O | 1 |
| 6120 | 10.0 | 35.0 | 45.0 | 10.0 | 13.425 | O | 1 |
| 6121 | 9.0 | 36.0 | 45.0 | 10.0 | 13.058 | O | 1 |
| 6122 | 8.0 | 37.0 | 45.0 | 10.0 | 12.640 | O | 1 |
| 6123 | 7.0 | 38.0 | 45.0 | 10.0 | 12.223 | O | 1 |
| 6124 | 6.0 | 39.0 | 45.0 | 10.0 | 11.805 | O | 1 |
| 6125 | 5.0 | 40.0 | 45.0 | 10.0 | 11.387 | O | 1 |
| 6126 | 4.0 | 41.0 | 45.0 | 10.0 | 10.969 | O | 1 |
| 6127 | 3.0 | 42.0 | 45.0 | 10.0 | 10.551 | O | 1 |
| 6128 | 2.0 | 43.0 | 45.0 | 10.0 | 10.133 | O | 1 |
| 6129 | 1.0 | 44.0 | 45.0 | 10.0 | 9.715 | O | 1 |
| 6130 | 0.0 | 45.0 | 45.0 | 10.0 | 9.297 | O | 1 |
| 6131 | 26.0 | 14.0 | 50.0 | 10.0 | 19.164 | X | 1 |
| 6132 | 25.6 | 14.4 | 50.0 | 10.0 | 19.022 | X | 1 |
| 6133 | 25.5 | 14.5 | 50.0 | 10.0 | 18.986 | O | 1 |

[Table 103]

| 6134 | 25.0 | 15.0 | 50.0 | 10.0 | 18.808 | O | 1 |
|---|---|---|---|---|---|---|---|
| 6135 | 20.0 | 20.0 | 50.0 | 10.0 | 17.023 | O | 1 |
| 6136 | 10.0 | 30.0 | 50.0 | 10.0 | 13.455 | O | 1 |
| 6137 | 9.0 | 31.0 | 50.0 | 10.0 | 13.099 | O | 1 |
| 6138 | 8.0 | 32.0 | 50.0 | 10.0 | 12.681 | O | 1 |
| 6139 | 7.0 | 33.0 | 50.0 | 10.0 | 12.263 | O | 1 |
| 6140 | 6.0 | 34.0 | 50.0 | 10.0 | 11.845 | O | 1 |
| 6141 | 5.0 | 35.0 | 50.0 | 10.0 | 11.427 | O | 1 |
| 6142 | 4.0 | 36.0 | 50.0 | 10.0 | 11.009 | O | 1 |
| 6143 | 3.0 | 37.0 | 50.0 | 10.0 | 10.591 | O | 1 |
| 6144 | 2.0 | 38.0 | 50.0 | 10.0 | 10.173 | O | 1 |
| 6145 | 1.0 | 39.0 | 50.0 | 10.0 | 9.755 | O | 1 |
| 6146 | 0.0 | 40.0 | 50.0 | 10.0 | 9.337 | O | 1 |
| 6147 | 26.0 | 9.0 | 55.0 | 10.0 | 19.194 | X | 1 |
| 6148 | 25.5 | 9.5 | 55.0 | 10.0 | 19.016 | X | 1 |
| 6149 | 25.4 | 9.6 | 55.0 | 10.0 | 18.980 | O | 1 |
| 6150 | 25.0 | 10.0 | 55.0 | 10.0 | 18.838 | O | 1 |
| 6151 | 20.0 | 15.0 | 55.0 | 10.0 | 17.053 | O | 1 |
| 6152 | 10.0 | 25.0 | 55.0 | 10.0 | 13.485 | O | 1 |
| 6153 | 9.0 | 26.0 | 55.0 | 10.0 | 13.128 | O | 1 |
| 6154 | 8.0 | 27.0 | 55.0 | 10.0 | 12.721 | O | 1 |
| 6155 | 7.0 | 28.0 | 55.0 | 10.0 | 12.303 | O | 1 |
| 6156 | 6.0 | 29.0 | 55.0 | 10.0 | 11.885 | O | 1 |
| 6157 | 5.0 | 30.0 | 55.0 | 10.0 | 11.467 | O | 1 |
| 6158 | 4.0 | 31.0 | 55.0 | 10.0 | 11.049 | O | 1 |
| 6159 | 3.0 | 32.0 | 55.0 | 10.0 | 10.631 | O | 1 |
| 6160 | 2.0 | 33.0 | 55.0 | 10.0 | 10.213 | O | 1 |
| 6161 | 1.0 | 34.0 | 55.0 | 10.0 | 9.795 | O | 1 |
| 6162 | 0.0 | 35.0 | 55.0 | 10.0 | 9.377 | O | 1 |
| 6163 | 26.0 | 4.0 | 60.0 | 10.0 | 19.224 | X | 1 |
| 6164 | 25.4 | 4.6 | 60.0 | 10.0 | 19.010 | X | 1 |
| 6165 | 25.3 | 4.7 | 60.0 | 10.0 | 18.975 | O | 1 |
| 6166 | 25.0 | 5.0 | 60.0 | 10.0 | 18.867 | O | 1 |
| 6167 | 20.0 | 10.0 | 60.0 | 10.0 | 17.083 | O | 1 |
| 6168 | 10.0 | 20.0 | 60.0 | 10.0 | 13.515 | O | 1 |
| 6169 | 9.0 | 21.0 | 60.0 | 10.0 | 13.158 | O | 1 |
| 6170 | 8.0 | 22.0 | 60.0 | 10.0 | 12.761 | O | 1 |
| 6171 | 7.0 | 23.0 | 60.0 | 10.0 | 12.343 | O | 1 |
| 6172 | 6.0 | 24.0 | 60.0 | 10.0 | 11.925 | O | 1 |
| 6173 | 5.0 | 25.0 | 60.0 | 10.0 | 11.507 | O | 1 |
| 6174 | 4.0 | 26.0 | 60.0 | 10.0 | 11.089 | O | 1 |
| 6175 | 3.0 | 27.0 | 60.0 | 10.0 | 10.671 | O | 1 |
| 6176 | 2.0 | 28.0 | 60.0 | 10.0 | 10.253 | O | 1 |
| 6177 | 1.0 | 29.0 | 60.0 | 10.0 | 9.835 | O | 1 |
| 6178 | 0.0 | 30.0 | 60.0 | 10.0 | 9.418 | O | 1 |

Tables 104 to 120 show the composition, combustion heat amount, and GWP of the working medium of a four-component system of propane, HFO-1123, HFO-1234yf, and $CF_3I$.

[Table 104]

| Case | propane | HFO-1123 | HFO-1234yf | CF$_3$I | Heat of Combustion | Evaluation | GWP |
|---|---|---|---|---|---|---|---|
| 6179 | 25.0 | 65.0 | 5.0 | 5.0 | 19.137 | X | 1 |
| 6180 | 24.7 | 65.3 | 5.0 | 5.0 | 19.030 | X | 1 |
| 6181 | 24.6 | 65.4 | 5.0 | 5.0 | 18.994 | O | 1 |
| 6182 | 24.0 | 66.0 | 5.0 | 5.0 | 18.780 | O | 1 |
| 6183 | 20.0 | 70.0 | 5.0 | 5.0 | 17.353 | O | 1 |
| 6184 | 10.0 | 80.0 | 5.0 | 5.0 | 13.695 | O | 1 |
| 6185 | 9.0 | 81.0 | 5.0 | 5.0 | 13.278 | O | 1 |
| 6186 | 8.0 | 82.0 | 5.0 | 5.0 | 12.860 | O | 1 |
| 6187 | 7.0 | 83.0 | 5.0 | 5.0 | 12.442 | O | 1 |
| 6188 | 6.0 | 84.0 | 5.0 | 5.0 | 12.024 | O | 1 |
| 6189 | 5.0 | 85.0 | 5.0 | 5.0 | 11.606 | O | 1 |
| 6190 | 4.0 | 86.0 | 5.0 | 5.0 | 11.188 | O | 1 |
| 6191 | 3.0 | 87.0 | 5.0 | 5.0 | 10.770 | O | 1 |
| 6192 | 2.0 | 88.0 | 5.0 | 5.0 | 10.352 | O | 1 |
| 6193 | 1.0 | 89.0 | 5.0 | 5.0 | 9.934 | O | 1 |
| 6194 | 0.0 | 90.0 | 5.0 | 5.0 | 9.516 | O | 1 |
| 6195 | 25.0 | 60.0 | 10.0 | 5.0 | 19.167 | X | 1 |
| 6196 | 24.6 | 60.4 | 10.0 | 5.0 | 19.024 | X | 1 |
| 6197 | 24.5 | 60.5 | 10.0 | 5.0 | 18.989 | O | 1 |
| 6198 | 24.0 | 61.0 | 10.0 | 5.0 | 18.810 | O | 1 |
| 6199 | 20.0 | 65.0 | 10.0 | 5.0 | 17.383 | O | 1 |
| 6200 | 10.0 | 75.0 | 10.0 | 5.0 | 13.736 | O | 1 |
| 6201 | 9.0 | 76.0 | 10.0 | 5.0 | 13.318 | O | 1 |
| 6202 | 8.0 | 77.0 | 10.0 | 5.0 | 12.900 | O | 1 |
| 6203 | 7.0 | 78.0 | 10.0 | 5.0 | 12.482 | O | 1 |
| 6204 | 6.0 | 79.0 | 10.0 | 5.0 | 12.064 | O | 1 |
| 6205 | 5.0 | 80.0 | 10.0 | 5.0 | 11.646 | O | 1 |
| 6206 | 4.0 | 81.0 | 10.0 | 5.0 | 11.228 | O | 1 |
| 6207 | 3.0 | 82.0 | 10.0 | 5.0 | 10.810 | O | 1 |
| 6208 | 2.0 | 83.0 | 10.0 | 5.0 | 10.392 | O | 1 |
| 6209 | 1.0 | 84.0 | 10.0 | 5.0 | 9.974 | O | 1 |
| 6210 | 0.0 | 85.0 | 10.0 | 5.0 | 9.556 | O | 1 |
| 6211 | 25.0 | 55.0 | 15.0 | 5.0 | 19.197 | X | 1 |
| 6212 | 24.5 | 55.5 | 15.0 | 5.0 | 19.018 | X | 1 |
| 6213 | 24.4 | 55.6 | 15.0 | 5.0 | 18.983 | O | 1 |
| 6214 | 24.0 | 56.0 | 15.0 | 5.0 | 18.840 | O | 1 |
| 6215 | 20.0 | 60.0 | 15.0 | 5.0 | 17.413 | O | 1 |
| 6216 | 10.0 | 70.0 | 15.0 | 5.0 | 13.776 | O | 1 |
| 6217 | 9.0 | 71.0 | 15.0 | 5.0 | 13.358 | O | 1 |
| 6218 | 8.0 | 72.0 | 15.0 | 5.0 | 12.940 | O | 1 |
| 6219 | 7.0 | 73.0 | 15.0 | 5.0 | 12.522 | O | 1 |
| 6220 | 6.0 | 74.0 | 15.0 | 5.0 | 12.104 | O | 1 |
| 6221 | 5.0 | 75.0 | 15.0 | 5.0 | 11.686 | O | 1 |
| 6222 | 4.0 | 76.0 | 15.0 | 5.0 | 11.268 | O | 1 |
| 6223 | 3.0 | 77.0 | 15.0 | 5.0 | 10.850 | O | 1 |
| 6224 | 2.0 | 78.0 | 15.0 | 5.0 | 10.432 | O | 1 |
| 6225 | 1.0 | 79.0 | 15.0 | 5.0 | 10.014 | O | 1 |
| 6226 | 0.0 | 80.0 | 15.0 | 5.0 | 9.597 | O | 1 |
| 6227 | 25.0 | 50.0 | 20.0 | 5.0 | 19.227 | X | 1 |
| 6228 | 24.4 | 50.6 | 20.0 | 5.0 | 19.013 | X | 1 |

[Table 105]

| | | | | | | | |
|---|---|---|---|---|---|---|---|
| 6229 | 24.3 | 50.7 | 20.0 | 5.0 | 18.977 | O | 1 |
| 6230 | 24.0 | 51.0 | 20.0 | 5.0 | 18.870 | O | 1 |
| 6231 | 20.0 | 55.0 | 20.0 | 5.0 | 17.443 | O | 1 |
| 6232 | 10.0 | 65.0 | 20.0 | 5.0 | 13.816 | O | 1 |
| 6233 | 9.0 | 66.0 | 20.0 | 5.0 | 13.398 | O | 1 |
| 6234 | 8.0 | 67.0 | 20.0 | 5.0 | 12.980 | O | 1 |
| 6235 | 7.0 | 68.0 | 20.0 | 5.0 | 12.562 | O | 1 |
| 6236 | 6.0 | 69.0 | 20.0 | 5.0 | 12.144 | O | 1 |
| 6237 | 5.0 | 70.0 | 20.0 | 5.0 | 11.726 | O | 1 |
| 6238 | 4.0 | 71.0 | 20.0 | 5.0 | 11.308 | O | 1 |
| 6239 | 3.0 | 72.0 | 20.0 | 5.0 | 10.890 | O | 1 |
| 6240 | 2.0 | 73.0 | 20.0 | 5.0 | 10.473 | O | 1 |
| 6241 | 1.0 | 74.0 | 20.0 | 5.0 | 10.055 | O | 1 |
| 6242 | 0.0 | 75.0 | 20.0 | 5.0 | 9.637 | O | 1 |
| 6243 | 25.0 | 45.0 | 25.0 | 5.0 | 19.257 | X | 1 |
| 6244 | 24.3 | 45.7 | 25.0 | 5.0 | 19.007 | X | 1 |
| 6245 | 24.2 | 45.8 | 25.0 | 5.0 | 18.971 | O | 1 |
| 6246 | 24.0 | 46.0 | 25.0 | 5.0 | 18.900 | O | 1 |
| 6247 | 20.0 | 50.0 | 25.0 | 5.0 | 17.473 | O | 1 |
| 6248 | 10.0 | 60.0 | 25.0 | 5.0 | 13.856 | O | 1 |
| 6249 | 9.0 | 61.0 | 25.0 | 5.0 | 13.438 | O | 1 |
| 6250 | 8.0 | 62.0 | 25.0 | 5.0 | 13.020 | O | 1 |
| 6251 | 7.0 | 63.0 | 25.0 | 5.0 | 12.602 | O | 1 |
| 6252 | 6.0 | 64.0 | 25.0 | 5.0 | 12.184 | O | 1 |
| 6253 | 5.0 | 65.0 | 25.0 | 5.0 | 11.766 | O | 1 |
| 6254 | 4.0 | 66.0 | 25.0 | 5.0 | 11.349 | O | 1 |
| 6255 | 3.0 | 67.0 | 25.0 | 5.0 | 10.931 | O | 1 |
| 6256 | 2.0 | 68.0 | 25.0 | 5.0 | 10.513 | O | 1 |
| 6257 | 1.0 | 69.0 | 25.0 | 5.0 | 10.095 | O | 1 |
| 6258 | 0.0 | 70.0 | 25.0 | 5.0 | 9.677 | O | 1 |
| 6259 | 25.0 | 40.0 | 30.0 | 5.0 | 19.287 | X | 1 |
| 6260 | 24.2 | 40.8 | 30.0 | 5.0 | 19.001 | X | 1 |
| 6261 | 24.1 | 40.9 | 30.0 | 5.0 | 18.966 | O | 1 |
| 6262 | 24.0 | 41.0 | 30.0 | 5.0 | 18.930 | O | 1 |
| 6263 | 20.0 | 45.0 | 30.0 | 5.0 | 17.503 | O | 1 |
| 6264 | 10.0 | 55.0 | 30.0 | 5.0 | 13.896 | O | 1 |
| 6265 | 9.0 | 56.0 | 30.0 | 5.0 | 13.478 | O | 1 |
| 6266 | 8.0 | 57.0 | 30.0 | 5.0 | 13.060 | O | 1 |
| 6267 | 7.0 | 58.0 | 30.0 | 5.0 | 12.642 | O | 1 |
| 6268 | 6.0 | 59.0 | 30.0 | 5.0 | 12.224 | O | 1 |
| 6269 | 5.0 | 60.0 | 30.0 | 5.0 | 11.807 | O | 1 |
| 6270 | 4.0 | 61.0 | 30.0 | 5.0 | 11.389 | O | 1 |
| 6271 | 3.0 | 62.0 | 30.0 | 5.0 | 10.971 | O | 1 |
| 6272 | 2.0 | 63.0 | 30.0 | 5.0 | 10.553 | O | 1 |
| 6273 | 1.0 | 64.0 | 30.0 | 5.0 | 10.135 | O | 1 |
| 6274 | 0.0 | 65.0 | 30.0 | 5.0 | 9.717 | O | 1 |
| 6275 | 25.0 | 35.0 | 35.0 | 5.0 | 19.317 | X | 1 |
| 6276 | 24.2 | 35.8 | 35.0 | 5.0 | 19.031 | X | 1 |
| 6277 | 24.1 | 35.9 | 35.0 | 5.0 | 18.996 | O | 1 |
| 6278 | 24.0 | 36.0 | 35.0 | 5.0 | 18.960 | O | 1 |

[Table 106]

| 6279 | 20.0 | 40.0 | 35.0 | 5.0 | 17.533 | O | 1 |
|---|---|---|---|---|---|---|---|
| 6280 | 10.0 | 50.0 | 35.0 | 5.0 | 13.936 | O | 1 |
| 6281 | 9.0 | 51.0 | 35.0 | 5.0 | 13.518 | O | 1 |
| 6282 | 8.0 | 52.0 | 35.0 | 5.0 | 13.100 | O | 1 |
| 6283 | 7.0 | 53.0 | 35.0 | 5.0 | 12.683 | O | 1 |
| 6284 | 6.0 | 54.0 | 35.0 | 5.0 | 12.265 | O | 1 |
| 6285 | 5.0 | 55.0 | 35.0 | 5.0 | 11.847 | O | 1 |
| 6286 | 4.0 | 56.0 | 35.0 | 5.0 | 11.429 | O | 1 |
| 6287 | 3.0 | 57.0 | 35.0 | 5.0 | 11.011 | O | 1 |
| 6288 | 2.0 | 58.0 | 35.0 | 5.0 | 10.593 | O | 1 |
| 6289 | 1.0 | 59.0 | 35.0 | 5.0 | 10.175 | O | 1 |
| 6290 | 0.0 | 60.0 | 35.0 | 5.0 | 9.757 | O | 1 |
| 6291 | 25.0 | 30.0 | 40.0 | 5.0 | 19.347 | X | 1 |
| 6292 | 24.1 | 30.9 | 40.0 | 5.0 | 19.026 | X | 1 |
| 6293 | 24.0 | 31.0 | 40.0 | 5.0 | 18.990 | O | 1 |
| 6294 | 20.0 | 35.0 | 40.0 | 5.0 | 17.563 | O | 1 |
| 6295 | 10.0 | 45.0 | 40.0 | 5.0 | 13.976 | O | 1 |
| 6296 | 9.0 | 46.0 | 40.0 | 5.0 | 13.559 | O | 1 |
| 6297 | 8.0 | 47.0 | 40.0 | 5.0 | 13.141 | O | 1 |
| 6298 | 7.0 | 48.0 | 40.0 | 5.0 | 12.723 | O | 1 |
| 6299 | 6.0 | 49.0 | 40.0 | 5.0 | 12.305 | O | 1 |
| 6300 | 5.0 | 50.0 | 40.0 | 5.0 | 11.887 | O | 1 |
| 6301 | 4.0 | 51.0 | 40.0 | 5.0 | 11.469 | O | 1 |
| 6302 | 3.0 | 52.0 | 40.0 | 5.0 | 11.051 | O | 1 |
| 6303 | 2.0 | 53.0 | 40.0 | 5.0 | 10.633 | O | 1 |
| 6304 | 1.0 | 54.0 | 40.0 | 5.0 | 10.215 | O | 1 |
| 6305 | 0.0 | 55.0 | 40.0 | 5.0 | 9.797 | O | 1 |
| 6306 | 24.0 | 26.0 | 45.0 | 5.0 | 19.020 | X | 1 |
| 6307 | 23.9 | 26.1 | 45.0 | 5.0 | 18.984 | O | 1 |
| 6308 | 23.0 | 27.0 | 45.0 | 5.0 | 18.663 | O | 1 |
| 6309 | 20.0 | 30.0 | 45.0 | 5.0 | 17.593 | O | 1 |
| 6310 | 10.0 | 40.0 | 45.0 | 5.0 | 14.017 | O | 1 |
| 6311 | 9.0 | 41.0 | 45.0 | 5.0 | 13.599 | O | 1 |
| 6312 | 8.0 | 42.0 | 45.0 | 5.0 | 13.181 | O | 1 |
| 6313 | 7.0 | 43.0 | 45.0 | 5.0 | 12.763 | O | 1 |
| 6314 | 6.0 | 44.0 | 45.0 | 5.0 | 12.345 | O | 1 |
| 6315 | 5.0 | 45.0 | 45.0 | 5.0 | 11.927 | O | 1 |
| 6316 | 4.0 | 46.0 | 45.0 | 5.0 | 11.509 | O | 1 |
| 6317 | 3.0 | 47.0 | 45.0 | 5.0 | 11.091 | O | 1 |
| 6318 | 2.0 | 48.0 | 45.0 | 5.0 | 10.673 | O | 1 |
| 6319 | 1.0 | 49.0 | 45.0 | 5.0 | 10.255 | O | 1 |
| 6320 | 0.0 | 50.0 | 45.0 | 5.0 | 9.837 | O | 1 |
| 6321 | 24.0 | 21.0 | 50.0 | 5.0 | 19.050 | X | 1 |
| 6322 | 23.9 | 21.1 | 50.0 | 5.0 | 19.014 | X | 1 |
| 6323 | 23.8 | 21.2 | 50.0 | 5.0 | 18.979 | O | 1 |
| 6324 | 23.0 | 22.0 | 50.0 | 5.0 | 18.693 | O | 1 |
| 6325 | 20.0 | 25.0 | 50.0 | 5.0 | 17.623 | O | 1 |
| 6326 | 10.0 | 35.0 | 50.0 | 5.0 | 14.055 | O | 1 |
| 6327 | 9.0 | 36.0 | 50.0 | 5.0 | 13.639 | O | 1 |
| 6328 | 8.0 | 37.0 | 50.0 | 5.0 | 13.221 | O | 1 |

[Table 107]

| 6329 | 7.0 | 38.0 | 50.0 | 5.0 | 12.803 | O | 1 |
|------|-----|------|------|-----|--------|---|---|
| 6330 | 6.0 | 39.0 | 50.0 | 5.0 | 12.385 | O | 1 |
| 6331 | 5.0 | 40.0 | 50.0 | 5.0 | 11.967 | O | 1 |
| 6332 | 4.0 | 41.0 | 50.0 | 5.0 | 11.549 | O | 1 |
| 6333 | 3.0 | 42.0 | 50.0 | 5.0 | 11.131 | O | 1 |
| 6334 | 2.0 | 43.0 | 50.0 | 5.0 | 10.713 | O | 1 |
| 6335 | 1.0 | 44.0 | 50.0 | 5.0 | 10.295 | O | 1 |
| 6336 | 0.0 | 45.0 | 50.0 | 5.0 | 9.878 | O | 1 |
| 6337 | 24.0 | 16.0 | 55.0 | 5.0 | 19.080 | X | 1 |
| 6338 | 23.8 | 16.2 | 55.0 | 5.0 | 19.009 | X | 1 |
| 6339 | 23.7 | 16.3 | 55.0 | 5.0 | 18.973 | O | 1 |
| 6340 | 23.0 | 17.0 | 55.0 | 5.0 | 18.723 | O | 1 |
| 6341 | 20.0 | 20.0 | 55.0 | 5.0 | 17.653 | O | 1 |
| 6342 | 10.0 | 30.0 | 55.0 | 5.0 | 14.084 | O | 1 |
| 6343 | 9.0 | 31.0 | 55.0 | 5.0 | 13.679 | O | 1 |
| 6344 | 8.0 | 32.0 | 55.0 | 5.0 | 13.261 | O | 1 |
| 6345 | 7.0 | 33.0 | 55.0 | 5.0 | 12.843 | O | 1 |
| 6346 | 6.0 | 34.0 | 55.0 | 5.0 | 12.425 | O | 1 |
| 6347 | 5.0 | 35.0 | 55.0 | 5.0 | 12.007 | O | 1 |
| 6348 | 4.0 | 36.0 | 55.0 | 5.0 | 11.589 | O | 1 |
| 6349 | 3.0 | 37.0 | 55.0 | 5.0 | 11.171 | O | 1 |
| 6350 | 2.0 | 38.0 | 55.0 | 5.0 | 10.753 | O | 1 |
| 6351 | 1.0 | 39.0 | 55.0 | 5.0 | 10.336 | O | 1 |
| 6352 | 0.0 | 40.0 | 55.0 | 5.0 | 9.918 | O | 1 |
| 6353 | 24.0 | 11.0 | 60.0 | 5.0 | 19.110 | X | 1 |
| 6354 | 23.7 | 11.3 | 60.0 | 5.0 | 19.003 | X | 1 |
| 6355 | 23.6 | 11.4 | 60.0 | 5.0 | 18.967 | O | 1 |
| 6356 | 23.0 | 12.0 | 60.0 | 5.0 | 18.753 | O | 1 |
| 6357 | 20.0 | 15.0 | 60.0 | 5.0 | 17.683 | O | 1 |
| 6358 | 10.0 | 25.0 | 60.0 | 5.0 | 14.114 | O | 1 |
| 6359 | 9.0 | 26.0 | 60.0 | 5.0 | 13.719 | O | 1 |
| 6360 | 8.0 | 27.0 | 60.0 | 5.0 | 13.301 | O | 1 |
| 6361 | 7.0 | 28.0 | 60.0 | 5.0 | 12.883 | O | 1 |
| 6362 | 6.0 | 29.0 | 60.0 | 5.0 | 12.465 | O | 1 |
| 6363 | 5.0 | 30.0 | 60.0 | 5.0 | 12.047 | O | 1 |
| 6364 | 4.0 | 31.0 | 60.0 | 5.0 | 11.629 | O | 1 |
| 6365 | 3.0 | 32.0 | 60.0 | 5.0 | 11.212 | O | 1 |
| 6366 | 2.0 | 33.0 | 60.0 | 5.0 | 10.794 | O | 1 |
| 6367 | 1.0 | 34.0 | 60.0 | 5.0 | 10.376 | O | 1 |
| 6368 | 0.0 | 35.0 | 60.0 | 5.0 | 9.958 | O | 1 |
| 6369 | 24.0 | 6.0 | 65.0 | 5.0 | 19.140 | X | 1 |
| 6370 | 23.7 | 6.3 | 65.0 | 5.0 | 19.033 | X | 1 |
| 6371 | 23.6 | 6.4 | 65.0 | 5.0 | 18.997 | O | 1 |
| 6372 | 23.0 | 7.0 | 65.0 | 5.0 | 18.783 | O | 1 |
| 6373 | 20.0 | 10.0 | 65.0 | 5.0 | 17.713 | O | 1 |
| 6374 | 10.0 | 20.0 | 65.0 | 5.0 | 14.144 | O | 1 |
| 6375 | 9.0 | 21.0 | 65.0 | 5.0 | 13.759 | O | 1 |
| 6376 | 8.0 | 22.0 | 65.0 | 5.0 | 13.341 | O | 1 |
| 6377 | 7.0 | 23.0 | 65.0 | 5.0 | 12.923 | O | 1 |
| 6378 | 6.0 | 24.0 | 65.0 | 5.0 | 12.505 | O | 1 |

[Table 108]

| 6379 | 5.0 | 25.0 | 65.0 | 5.0 | 12.088 | O | 1 |
|---|---|---|---|---|---|---|---|
| 6380 | 4.0 | 26.0 | 65.0 | 5.0 | 11.670 | O | 1 |
| 6381 | 3.0 | 27.0 | 65.0 | 5.0 | 11.252 | O | 1 |
| 6382 | 2.0 | 28.0 | 65.0 | 5.0 | 10.834 | O | 1 |
| 6383 | 1.0 | 29.0 | 65.0 | 5.0 | 10.416 | O | 1 |
| 6384 | 0.0 | 30.0 | 65.0 | 5.0 | 9.998 | O | 1 |
| 6385 | 24.0 | 1.0 | 70.0 | 5.0 | 19.170 | X | 1 |
| 6386 | 23.6 | 1.4 | 70.0 | 5.0 | 19.027 | X | 1 |
| 6387 | 23.5 | 1.5 | 70.0 | 5.0 | 18.991 | O | 1 |
| 6388 | 23.0 | 2.0 | 70.0 | 5.0 | 18.813 | O | 1 |
| 6389 | 20.0 | 5.0 | 70.0 | 5.0 | 17.743 | O | 1 |
| 6390 | 10.0 | 15.0 | 70.0 | 5.0 | 14.174 | O | 1 |
| 6391 | 9.0 | 16.0 | 70.0 | 5.0 | 13.799 | O | 1 |
| 6392 | 8.0 | 17.0 | 70.0 | 5.0 | 13.381 | O | 1 |
| 6393 | 7.0 | 18.0 | 70.0 | 5.0 | 12.963 | O | 1 |
| 6394 | 6.0 | 19.0 | 70.0 | 5.0 | 12.546 | O | 1 |
| 6395 | 5.0 | 20.0 | 70.0 | 5.0 | 12.128 | O | 1 |
| 6396 | 4.0 | 21.0 | 70.0 | 5.0 | 11.710 | O | 1 |
| 6397 | 3.0 | 22.0 | 70.0 | 5.0 | 11.292 | O | 1 |
| 6398 | 2.0 | 23.0 | 70.0 | 5.0 | 10.874 | O | 1 |
| 6399 | 1.0 | 24.0 | 70.0 | 5.0 | 10.456 | O | 1 |
| 6400 | 0.0 | 25.0 | 70.0 | 5.0 | 10.038 | O | 1 |
| 6401 | 26.0 | 59.0 | 5.0 | 10.0 | 19.028 | X | 1 |
| 6402 | 25.9 | 59.1 | 5.0 | 10.0 | 18.992 | O | 1 |
| 6403 | 25.0 | 60.0 | 5.0 | 10.0 | 18.671 | O | 1 |
| 6404 | 20.0 | 65.0 | 5.0 | 10.0 | 16.887 | O | 1 |
| 6405 | 10.0 | 75.0 | 5.0 | 10.0 | 13.243 | O | 1 |
| 6406 | 9.0 | 76.0 | 5.0 | 10.0 | 12.825 | O | 1 |
| 6407 | 8.0 | 77.0 | 5.0 | 10.0 | 12.407 | O | 1 |
| 6408 | 7.0 | 78.0 | 5.0 | 10.0 | 11.989 | O | 1 |
| 6409 | 6.0 | 79.0 | 5.0 | 10.0 | 11.571 | O | 1 |
| 6410 | 5.0 | 80.0 | 5.0 | 10.0 | 11.153 | O | 1 |
| 6411 | 4.0 | 81.0 | 5.0 | 10.0 | 10.735 | O | 1 |
| 6412 | 3.0 | 82.0 | 5.0 | 10.0 | 10.317 | O | 1 |
| 6413 | 2.0 | 83.0 | 5.0 | 10.0 | 9.900 | O | 1 |
| 6414 | 1.0 | 84.0 | 5.0 | 10.0 | 9.482 | O | 1 |
| 6415 | 0.0 | 85.0 | 5.0 | 10.0 | 9.064 | O | 1 |
| 6416 | 26.0 | 54.0 | 10.0 | 10.0 | 19.058 | X | 1 |
| 6417 | 25.9 | 54.1 | 10.0 | 10.0 | 19.022 | X | 1 |
| 6418 | 25.8 | 54.2 | 10.0 | 10.0 | 18.986 | O | 1 |
| 6419 | 25.0 | 55.0 | 10.0 | 10.0 | 18.701 | O | 1 |
| 6420 | 20.0 | 60.0 | 10.0 | 10.0 | 16.917 | O | 1 |
| 6421 | 10.0 | 70.0 | 10.0 | 10.0 | 13.283 | O | 1 |
| 6422 | 9.0 | 71.0 | 10.0 | 10.0 | 12.865 | O | 1 |
| 6423 | 8.0 | 72.0 | 10.0 | 10.0 | 12.447 | O | 1 |
| 6424 | 7.0 | 73.0 | 10.0 | 10.0 | 12.029 | O | 1 |
| 6425 | 6.0 | 74.0 | 10.0 | 10.0 | 11.611 | O | 1 |
| 6426 | 5.0 | 75.0 | 10.0 | 10.0 | 11.193 | O | 1 |
| 6427 | 4.0 | 76.0 | 10.0 | 10.0 | 10.775 | O | 1 |
| 6428 | 3.0 | 77.0 | 10.0 | 10.0 | 10.358 | O | 1 |

[Table 109]

| 6429 | 2.0 | 78.0 | 10.0 | 10.0 | 9.940 | O | 1 |
|------|------|------|------|------|--------|---|---|
| 6430 | 1.0 | 79.0 | 10.0 | 10.0 | 9.522 | O | 1 |
| 6431 | 0.0 | 80.0 | 10.0 | 10.0 | 9.104 | O | 1 |
| 6432 | 26.0 | 49.0 | 15.0 | 10.0 | 19.088 | X | 1 |
| 6433 | 25.8 | 49.2 | 15.0 | 10.0 | 19.016 | X | 1 |
| 6434 | 25.7 | 49.3 | 15.0 | 10.0 | 18.981 | O | 1 |
| 6435 | 25.0 | 50.0 | 15.0 | 10.0 | 18.731 | O | 1 |
| 6436 | 20.0 | 55.0 | 15.0 | 10.0 | 16.947 | O | 1 |
| 6437 | 10.0 | 65.0 | 15.0 | 10.0 | 13.323 | O | 1 |
| 6438 | 9.0 | 66.0 | 15.0 | 10.0 | 12.905 | O | 1 |
| 6439 | 8.0 | 67.0 | 15.0 | 10.0 | 12.487 | O | 1 |
| 6440 | 7.0 | 68.0 | 15.0 | 10.0 | 12.069 | O | 1 |
| 6441 | 6.0 | 69.0 | 15.0 | 10.0 | 11.651 | O | 1 |
| 6442 | 5.0 | 70.0 | 15.0 | 10.0 | 11.234 | O | 1 |
| 6443 | 4.0 | 71.0 | 15.0 | 10.0 | 10.816 | O | 1 |
| 6444 | 3.0 | 72.0 | 15.0 | 10.0 | 10.398 | O | 1 |
| 6445 | 2.0 | 73.0 | 15.0 | 10.0 | 9.980 | O | 1 |
| 6446 | 1.0 | 74.0 | 15.0 | 10.0 | 9.562 | O | 1 |
| 6447 | 0.0 | 75.0 | 15.0 | 10.0 | 9.144 | O | 1 |
| 6448 | 26.0 | 44.0 | 20.0 | 10.0 | 19.118 | X | 1 |
| 6449 | 25.7 | 44.3 | 20.0 | 10.0 | 19.011 | X | 1 |
| 6450 | 25.6 | 44.4 | 20.0 | 10.0 | 18.975 | O | 1 |
| 6451 | 25.0 | 45.0 | 20.0 | 10.0 | 18.761 | O | 1 |
| 6452 | 20.0 | 50.0 | 20.0 | 10.0 | 16.977 | O | 1 |
| 6453 | 10.0 | 60.0 | 20.0 | 10.0 | 13.363 | O | 1 |
| 6454 | 9.0 | 61.0 | 20.0 | 10.0 | 12.945 | O | 1 |
| 6455 | 8.0 | 62.0 | 20.0 | 10.0 | 12.527 | O | 1 |
| 6456 | 7.0 | 63.0 | 20.0 | 10.0 | 12.110 | O | 1 |
| 6457 | 6.0 | 64.0 | 20.0 | 10.0 | 11.692 | O | 1 |
| 6458 | 5.0 | 65.0 | 20.0 | 10.0 | 11.274 | O | 1 |
| 6459 | 4.0 | 66.0 | 20.0 | 10.0 | 10.856 | O | 1 |
| 6460 | 3.0 | 67.0 | 20.0 | 10.0 | 10.438 | O | 1 |
| 6461 | 2.0 | 68.0 | 20.0 | 10.0 | 10.020 | O | 1 |
| 6462 | 1.0 | 69.0 | 20.0 | 10.0 | 9.602 | O | 1 |
| 6463 | 0.0 | 70.0 | 20.0 | 10.0 | 9.184 | O | 1 |
| 6464 | 26.0 | 39.0 | 25.0 | 10.0 | 19.148 | X | 1 |
| 6465 | 25.6 | 39.4 | 25.0 | 10.0 | 19.005 | X | 1 |
| 6466 | 25.5 | 39.5 | 25.0 | 10.0 | 18.969 | O | 1 |
| 6467 | 25.0 | 40.0 | 25.0 | 10.0 | 18.791 | O | 1 |
| 6468 | 20.0 | 45.0 | 25.0 | 10.0 | 17.007 | O | 1 |
| 6469 | 10.0 | 55.0 | 25.0 | 10.0 | 13.403 | O | 1 |
| 6470 | 9.0 | 56.0 | 25.0 | 10.0 | 12.985 | O | 1 |
| 6471 | 8.0 | 57.0 | 25.0 | 10.0 | 12.568 | O | 1 |
| 6472 | 7.0 | 58.0 | 25.0 | 10.0 | 12.150 | O | 1 |
| 6473 | 6.0 | 59.0 | 25.0 | 10.0 | 11.732 | O | 1 |
| 6474 | 5.0 | 60.0 | 25.0 | 10.0 | 11.314 | O | 1 |
| 6475 | 4.0 | 61.0 | 25.0 | 10.0 | 10.896 | O | 1 |
| 6476 | 3.0 | 62.0 | 25.0 | 10.0 | 10.478 | O | 1 |
| 6477 | 2.0 | 63.0 | 25.0 | 10.0 | 10.060 | O | 1 |
| 6478 | 1.0 | 64.0 | 25.0 | 10.0 | 9.642 | O | 1 |

[Table 110]

| 6479 | 0.0 | 65.0 | 25.0 | 10.0 | 9.224 | O | 1 |
|---|---|---|---|---|---|---|---|
| 6480 | 26.0 | 34.0 | 30.0 | 10.0 | 19.178 | X | 1 |
| 6481 | 25.6 | 34.4 | 30.0 | 10.0 | 19.035 | X | 1 |
| 6482 | 25.5 | 34.5 | 30.0 | 10.0 | 18.999 | O | 1 |
| 6483 | 25.0 | 35.0 | 30.0 | 10.0 | 18.821 | O | 1 |
| 6484 | 20.0 | 40.0 | 30.0 | 10.0 | 17.037 | O | 1 |
| 6485 | 10.0 | 50.0 | 30.0 | 10.0 | 13.444 | O | 1 |
| 6486 | 9.0 | 51.0 | 30.0 | 10.0 | 13.026 | O | 1 |
| 6487 | 8.0 | 52.0 | 30.0 | 10.0 | 12.608 | O | 1 |
| 6488 | 7.0 | 53.0 | 30.0 | 10.0 | 12.190 | O | 1 |
| 6489 | 6.0 | 54.0 | 30.0 | 10.0 | 11.772 | O | 1 |
| 6490 | 5.0 | 55.0 | 30.0 | 10.0 | 11.354 | O | 1 |
| 6491 | 4.0 | 56.0 | 30.0 | 10.0 | 10.936 | O | 1 |
| 6492 | 3.0 | 57.0 | 30.0 | 10.0 | 10.518 | O | 1 |
| 6493 | 2.0 | 58.0 | 30.0 | 10.0 | 10.100 | O | 1 |
| 6494 | 1.0 | 59.0 | 30.0 | 10.0 | 9.682 | O | 1 |
| 6495 | 0.0 | 60.0 | 30.0 | 10.0 | 9.264 | O | 1 |
| 6496 | 26.0 | 29.0 | 35.0 | 10.0 | 19.208 | X | 1 |
| 6497 | 25.5 | 29.5 | 35.0 | 10.0 | 19.029 | X | 1 |
| 6498 | 25.4 | 29.6 | 35.0 | 10.0 | 18.993 | O | 1 |
| 6499 | 25.0 | 30.0 | 35.0 | 10.0 | 18.851 | O | 1 |
| 6500 | 20.0 | 35.0 | 35.0 | 10.0 | 17.067 | O | 1 |
| 6501 | 10.0 | 45.0 | 35.0 | 10.0 | 13.484 | O | 1 |
| 6502 | 9.0 | 46.0 | 35.0 | 10.0 | 13.066 | O | 1 |
| 6503 | 8.0 | 47.0 | 35.0 | 10.0 | 12.648 | O | 1 |
| 6504 | 7.0 | 48.0 | 35.0 | 10.0 | 12.230 | O | 1 |
| 6505 | 6.0 | 49.0 | 35.0 | 10.0 | 11.812 | O | 1 |
| 6506 | 5.0 | 50.0 | 35.0 | 10.0 | 11.394 | O | 1 |
| 6507 | 4.0 | 51.0 | 35.0 | 10.0 | 10.976 | O | 1 |
| 6508 | 3.0 | 52.0 | 35.0 | 10.0 | 10.558 | O | 1 |
| 6509 | 2.0 | 53.0 | 35.0 | 10.0 | 10.140 | O | 1 |
| 6510 | 1.0 | 54.0 | 35.0 | 10.0 | 9.722 | O | 1 |
| 6511 | 0.0 | 55.0 | 35.0 | 10.0 | 9.304 | O | 1 |
| 6512 | 26.0 | 24.0 | 40.0 | 10.0 | 19.237 | X | 1 |
| 6513 | 25.4 | 24.6 | 40.0 | 10.0 | 19.023 | X | 1 |
| 6514 | 25.3 | 24.7 | 40.0 | 10.0 | 18.988 | O | 1 |
| 6515 | 25.0 | 25.0 | 40.0 | 10.0 | 18.881 | O | 1 |
| 6516 | 20.0 | 30.0 | 40.0 | 10.0 | 17.097 | O | 1 |
| 6517 | 10.0 | 40.0 | 40.0 | 10.0 | 13.524 | O | 1 |
| 6518 | 9.0 | 41.0 | 40.0 | 10.0 | 13.106 | O | 1 |
| 6519 | 8.0 | 42.0 | 40.0 | 10.0 | 12.688 | O | 1 |
| 6520 | 7.0 | 43.0 | 40.0 | 10.0 | 12.270 | O | 1 |
| 6521 | 6.0 | 44.0 | 40.0 | 10.0 | 11.852 | O | 1 |
| 6522 | 5.0 | 45.0 | 40.0 | 10.0 | 11.434 | O | 1 |
| 6523 | 4.0 | 46.0 | 40.0 | 10.0 | 11.016 | O | 1 |
| 6524 | 3.0 | 47.0 | 40.0 | 10.0 | 10.598 | O | 1 |
| 6525 | 2.0 | 48.0 | 40.0 | 10.0 | 10.180 | O | 1 |
| 6526 | 1.0 | 49.0 | 40.0 | 10.0 | 9.763 | O | 1 |
| 6527 | 0.0 | 50.0 | 40.0 | 10.0 | 9.345 | O | 1 |
| 6528 | 26.0 | 19.0 | 45.0 | 10.0 | 19.267 | X | 1 |

[Table 111]

| 6529 | 25.3 | 19.7 | 45.0 | 10.0 | 19.018 | X | 1 |
|------|------|------|------|------|--------|---|---|
| 6530 | 25.2 | 19.8 | 45.0 | 10.0 | 18.982 | O | 1 |
| 6531 | 25.0 | 20.0 | 45.0 | 10.0 | 18.911 | O | 1 |
| 6532 | 20.0 | 25.0 | 45.0 | 10.0 | 17.127 | O | 1 |
| 6533 | 10.0 | 35.0 | 45.0 | 10.0 | 13.558 | O | 1 |
| 6534 | 9.0 | 36.0 | 45.0 | 10.0 | 13.146 | O | 1 |
| 6535 | 8.0 | 37.0 | 45.0 | 10.0 | 12.728 | O | 1 |
| 6536 | 7.0 | 38.0 | 45.0 | 10.0 | 12.310 | O | 1 |
| 6537 | 6.0 | 39.0 | 45.0 | 10.0 | 11.892 | O | 1 |
| 6538 | 5.0 | 40.0 | 45.0 | 10.0 | 11.474 | O | 1 |
| 6539 | 4.0 | 41.0 | 45.0 | 10.0 | 11.056 | O | 1 |
| 6540 | 3.0 | 42.0 | 45.0 | 10.0 | 10.639 | O | 1 |
| 6541 | 2.0 | 43.0 | 45.0 | 10.0 | 10.221 | O | 1 |
| 6542 | 1.0 | 44.0 | 45.0 | 10.0 | 9.803 | O | 1 |
| 6543 | 0.0 | 45.0 | 45.0 | 10.0 | 9.385 | O | 1 |
| 6544 | 26.0 | 14.0 | 50.0 | 10.0 | 19.297 | X | 1 |
| 6545 | 25.2 | 14.8 | 50.0 | 10.0 | 19.012 | X | 1 |
| 6546 | 25.1 | 14.9 | 50.0 | 10.0 | 18.976 | O | 1 |
| 6547 | 25.0 | 15.0 | 50.0 | 10.0 | 18.941 | O | 1 |
| 6548 | 20.0 | 20.0 | 50.0 | 10.0 | 17.157 | O | 1 |
| 6549 | 10.0 | 30.0 | 50.0 | 10.0 | 13.588 | O | 1 |
| 6550 | 9.0 | 31.0 | 50.0 | 10.0 | 13.186 | O | 1 |
| 6551 | 8.0 | 32.0 | 50.0 | 10.0 | 12.768 | O | 1 |
| 6552 | 7.0 | 33.0 | 50.0 | 10.0 | 12.350 | O | 1 |
| 6553 | 6.0 | 34.0 | 50.0 | 10.0 | 11.932 | O | 1 |
| 6554 | 5.0 | 35.0 | 50.0 | 10.0 | 11.514 | O | 1 |
| 6555 | 4.0 | 36.0 | 50.0 | 10.0 | 11.097 | O | 1 |
| 6556 | 3.0 | 37.0 | 50.0 | 10.0 | 10.679 | O | 1 |
| 6557 | 2.0 | 38.0 | 50.0 | 10.0 | 10.261 | O | 1 |
| 6558 | 1.0 | 39.0 | 50.0 | 10.0 | 9.843 | O | 1 |
| 6559 | 0.0 | 40.0 | 50.0 | 10.0 | 9.425 | O | 1 |
| 6560 | 26.0 | 9.0 | 55.0 | 10.0 | 19.327 | X | 1 |
| 6561 | 25.1 | 9.9 | 55.0 | 10.0 | 19.006 | X | 1 |
| 6562 | 25.0 | 10.0 | 55.0 | 10.0 | 18.971 | O | 1 |
| 6563 | 20.0 | 15.0 | 55.0 | 10.0 | 17.187 | O | 1 |
| 6564 | 10.0 | 25.0 | 55.0 | 10.0 | 13.618 | O | 1 |
| 6565 | 9.0 | 26.0 | 55.0 | 10.0 | 13.226 | O | 1 |
| 6566 | 8.0 | 27.0 | 55.0 | 10.0 | 12.808 | O | 1 |
| 6567 | 7.0 | 28.0 | 55.0 | 10.0 | 12.390 | O | 1 |
| 6568 | 6.0 | 29.0 | 55.0 | 10.0 | 11.973 | O | 1 |
| 6569 | 5.0 | 30.0 | 55.0 | 10.0 | 11.555 | O | 1 |
| 6570 | 4.0 | 31.0 | 55.0 | 10.0 | 11.137 | O | 1 |
| 6571 | 3.0 | 32.0 | 55.0 | 10.0 | 10.719 | O | 1 |
| 6572 | 2.0 | 33.0 | 55.0 | 10.0 | 10.301 | O | 1 |
| 6573 | 1.0 | 34.0 | 55.0 | 10.0 | 9.883 | O | 1 |
| 6574 | 0.0 | 35.0 | 55.0 | 10.0 | 9.465 | O | 1 |
| 6575 | 25.0 | 5.0 | 60.0 | 10.0 | 19.001 | X | 1 |
| 6576 | 24.9 | 5.1 | 60.0 | 10.0 | 18.965 | O | 1 |
| 6577 | 24.0 | 6.0 | 60.0 | 10.0 | 18.644 | O | 1 |
| 6578 | 20.0 | 10.0 | 60.0 | 10.0 | 17.216 | O | 1 |

[Table 112]

| 6579 | 10.0 | 20.0 | 60.0 | 10.0 | 13.648 | O | 1 |
|------|------|------|------|------|--------|---|---|
| 6580 | 9.0 | 21.0 | 60.0 | 10.0 | 13.266 | O | 1 |
| 6581 | 8.0 | 22.0 | 60.0 | 10.0 | 12.848 | O | 1 |
| 6582 | 7.0 | 23.0 | 60.0 | 10.0 | 12.431 | O | 1 |
| 6583 | 6.0 | 24.0 | 60.0 | 10.0 | 12.013 | O | 1 |
| 6584 | 5.0 | 25.0 | 60.0 | 10.0 | 11.595 | O | 1 |
| 6585 | 4.0 | 26.0 | 60.0 | 10.0 | 11.177 | O | 1 |
| 6586 | 3.0 | 27.0 | 60.0 | 10.0 | 10.759 | O | 1 |
| 6587 | 2.0 | 28.0 | 60.0 | 10.0 | 10.341 | O | 1 |
| 6588 | 1.0 | 29.0 | 60.0 | 10.0 | 9.923 | O | 1 |
| 6589 | 0.0 | 30.0 | 60.0 | 10.0 | 9.505 | O | 1 |
| 6590 | 25.0 | 0.0 | 65.0 | 10.0 | 19.031 | X | 1 |
| 6591 | 24.9 | 0.1 | 65.0 | 10.0 | 18.995 | O | 1 |
| 6592 | 24.0 | 1.0 | 65.0 | 10.0 | 18.674 | O | 1 |
| 6593 | 20.0 | 5.0 | 65.0 | 10.0 | 17.246 | O | 1 |
| 6594 | 10.0 | 15.0 | 65.0 | 10.0 | 13.678 | O | 1 |
| 6595 | 9.0 | 16.0 | 65.0 | 10.0 | 13.307 | O | 1 |
| 6596 | 8.0 | 17.0 | 65.0 | 10.0 | 12.889 | O | 1 |
| 6597 | 7.0 | 18.0 | 65.0 | 10.0 | 12.471 | O | 1 |
| 6598 | 6.0 | 19.0 | 65.0 | 10.0 | 12.053 | O | 1 |
| 6599 | 5.0 | 20.0 | 65.0 | 10.0 | 11.635 | O | 1 |
| 6600 | 4.0 | 21.0 | 65.0 | 10.0 | 11.217 | O | 1 |
| 6601 | 3.0 | 22.0 | 65.0 | 10.0 | 10.799 | O | 1 |
| 6602 | 2.0 | 23.0 | 65.0 | 10.0 | 10.381 | O | 1 |
| 6603 | 1.0 | 24.0 | 65.0 | 10.0 | 9.963 | O | 1 |
| 6604 | 0.0 | 25.0 | 65.0 | 10.0 | 9.545 | O | 1 |
| 6605 | 29.0 | 46.0 | 5.0 | 20.0 | 19.166 | X | 1 |
| 6606 | 28.8 | 46.2 | 5.0 | 20.0 | 19.095 | X | 1 |
| 6607 | 28.5 | 46.5 | 5.0 | 20.0 | 18.988 | O | 1 |
| 6608 | 28.0 | 47.0 | 5.0 | 20.0 | 18.809 | O | 1 |
| 6609 | 20.0 | 55.0 | 5.0 | 20.0 | 15.955 | O | 1 |
| 6610 | 10.0 | 65.0 | 5.0 | 20.0 | 12.338 | O | 1 |
| 6611 | 9.0 | 66.0 | 5.0 | 20.0 | 11.920 | O | 1 |
| 6612 | 8.0 | 67.0 | 5.0 | 20.0 | 11.502 | O | 1 |
| 6613 | 7.0 | 68.0 | 5.0 | 20.0 | 11.084 | O | 1 |
| 6614 | 6.0 | 69.0 | 5.0 | 20.0 | 10.666 | O | 1 |
| 6615 | 5.0 | 70.0 | 5.0 | 20.0 | 10.248 | O | 1 |
| 6616 | 4.0 | 71.0 | 5.0 | 20.0 | 9.830 | O | 1 |
| 6617 | 3.0 | 72.0 | 5.0 | 20.0 | 9.412 | O | 1 |
| 6618 | 2.0 | 73.0 | 5.0 | 20.0 | 8.994 | O | 1 |
| 6619 | 1.0 | 74.0 | 5.0 | 20.0 | 8.576 | O | 1 |
| 6620 | 0.0 | 75.0 | 5.0 | 20.0 | 8.158 | O | 1 |
| 6621 | 29.0 | 41.0 | 10.0 | 20.0 | 19.196 | X | 1 |
| 6622 | 28.5 | 41.5 | 10.0 | 20.0 | 19.017 | X | 1 |
| 6623 | 28.4 | 41.6 | 10.0 | 20.0 | 18.982 | O | 1 |
| 6624 | 28.0 | 42.0 | 10.0 | 20.0 | 18.839 | O | 1 |
| 6625 | 20.0 | 50.0 | 10.0 | 20.0 | 15.985 | O | 1 |
| 6626 | 10.0 | 60.0 | 10.0 | 20.0 | 12.378 | O | 1 |
| 6627 | 9.0 | 61.0 | 10.0 | 20.0 | 11.960 | O | 1 |
| 6628 | 8.0 | 62.0 | 10.0 | 20.0 | 11.542 | O | 1 |

[Table 113]

| 6629 | 7.0 | 63.0 | 10.0 | 20.0 | 11.124 | O | 1 |
|------|-----|------|------|------|--------|---|---|
| 6630 | 6.0 | 64.0 | 10.0 | 20.0 | 10.706 | O | 1 |
| 6631 | 5.0 | 65.0 | 10.0 | 20.0 | 10.288 | O | 1 |
| 6632 | 4.0 | 66.0 | 10.0 | 20.0 | 9.870 | O | 1 |
| 6633 | 3.0 | 67.0 | 10.0 | 20.0 | 9.452 | O | 1 |
| 6634 | 2.0 | 68.0 | 10.0 | 20.0 | 9.034 | O | 1 |
| 6635 | 1.0 | 69.0 | 10.0 | 20.0 | 8.616 | O | 1 |
| 6636 | 0.0 | 70.0 | 10.0 | 20.0 | 8.199 | O | 1 |
| 6637 | 29.0 | 36.0 | 15.0 | 20.0 | 19.226 | X | 1 |
| 6638 | 28.4 | 36.6 | 15.0 | 20.0 | 19.012 | X | 1 |
| 6639 | 28.3 | 36.7 | 15.0 | 20.0 | 18.976 | O | 1 |
| 6640 | 28.0 | 37.0 | 15.0 | 20.0 | 18.869 | O | 1 |
| 6641 | 20.0 | 45.0 | 15.0 | 20.0 | 16.015 | O | 1 |
| 6642 | 10.0 | 55.0 | 15.0 | 20.0 | 12.418 | O | 1 |
| 6643 | 9.0 | 56.0 | 15.0 | 20.0 | 12.000 | O | 1 |
| 6644 | 8.0 | 57.0 | 15.0 | 20.0 | 11.582 | O | 1 |
| 6645 | 7.0 | 58.0 | 15.0 | 20.0 | 11.164 | O | 1 |
| 6646 | 6.0 | 59.0 | 15.0 | 20.0 | 10.746 | O | 1 |
| 6647 | 5.0 | 60.0 | 15.0 | 20.0 | 10.328 | O | 1 |
| 6648 | 4.0 | 61.0 | 15.0 | 20.0 | 9.910 | O | 1 |
| 6649 | 3.0 | 62.0 | 15.0 | 20.0 | 9.492 | O | 1 |
| 6650 | 2.0 | 63.0 | 15.0 | 20.0 | 9.075 | O | 1 |
| 6651 | 1.0 | 64.0 | 15.0 | 20.0 | 8.657 | O | 1 |
| 6652 | 0.0 | 65.0 | 15.0 | 20.0 | 8.239 | O | 1 |
| 6653 | 29.0 | 31.0 | 20.0 | 20.0 | 19.256 | X | 1 |
| 6654 | 28.3 | 31.7 | 20.0 | 20.0 | 19.006 | X | 1 |
| 6655 | 28.2 | 31.8 | 20.0 | 20.0 | 18.970 | O | 1 |
| 6656 | 28.0 | 32.0 | 20.0 | 20.0 | 18.899 | O | 1 |
| 6657 | 20.0 | 40.0 | 20.0 | 20.0 | 16.045 | O | 1 |
| 6658 | 10.0 | 50.0 | 20.0 | 20.0 | 12.458 | O | 1 |
| 6659 | 9.0 | 51.0 | 20.0 | 20.0 | 12.040 | O | 1 |
| 6660 | 8.0 | 52.0 | 20.0 | 20.0 | 11.622 | O | 1 |
| 6661 | 7.0 | 53.0 | 20.0 | 20.0 | 11.204 | O | 1 |
| 6662 | 6.0 | 54.0 | 20.0 | 20.0 | 10.786 | O | 1 |
| 6663 | 5.0 | 55.0 | 20.0 | 20.0 | 10.368 | O | 1 |
| 6664 | 4.0 | 56.0 | 20.0 | 20.0 | 9.950 | O | 1 |
| 6665 | 3.0 | 57.0 | 20.0 | 20.0 | 9.533 | O | 1 |
| 6666 | 2.0 | 58.0 | 20.0 | 20.0 | 9.115 | O | 1 |
| 6667 | 1.0 | 59.0 | 20.0 | 20.0 | 8.697 | O | 1 |
| 6668 | 0.0 | 60.0 | 20.0 | 20.0 | 8.279 | O | 1 |
| 6669 | 29.0 | 26.0 | 25.0 | 20.0 | 19.286 | X | 1 |
| 6670 | 28.2 | 26.8 | 25.0 | 20.0 | 19.000 | X | 1 |
| 6671 | 28.1 | 26.9 | 25.0 | 20.0 | 18.965 | O | 1 |
| 6672 | 28.0 | 27.0 | 25.0 | 20.0 | 18.929 | O | 1 |
| 6673 | 20.0 | 35.0 | 25.0 | 20.0 | 16.074 | O | 1 |
| 6674 | 10.0 | 45.0 | 25.0 | 20.0 | 12.498 | O | 1 |
| 6675 | 9.0 | 46.0 | 25.0 | 20.0 | 12.080 | O | 1 |
| 6676 | 8.0 | 47.0 | 25.0 | 20.0 | 11.662 | O | 1 |
| 6677 | 7.0 | 48.0 | 25.0 | 20.0 | 11.244 | O | 1 |
| 6678 | 6.0 | 49.0 | 25.0 | 20.0 | 10.826 | O | 1 |

[Table 114]

| 6679 | 5.0 | 50.0 | 25.0 | 20.0 | 10.409 | O | 1 |
|---|---|---|---|---|---|---|---|
| 6680 | 4.0 | 51.0 | 25.0 | 20.0 | 9.991 | O | 1 |
| 6681 | 3.0 | 52.0 | 25.0 | 20.0 | 9.573 | O | 1 |
| 6682 | 2.0 | 53.0 | 25.0 | 20.0 | 9.155 | O | 1 |
| 6683 | 1.0 | 54.0 | 25.0 | 20.0 | 8.737 | O | 1 |
| 6684 | 0.0 | 55.0 | 25.0 | 20.0 | 8.319 | O | 1 |
| 6685 | 29.0 | 21.0 | 30.0 | 20.0 | 19.316 | X | 1 |
| 6686 | 28.1 | 21.9 | 30.0 | 20.0 | 18.995 | O | 1 |
| 6687 | 28.0 | 22.0 | 30.0 | 20.0 | 18.959 | O | 1 |
| 6688 | 20.0 | 30.0 | 30.0 | 20.0 | 16.104 | O | 1 |
| 6689 | 10.0 | 40.0 | 30.0 | 20.0 | 12.536 | O | 1 |
| 6690 | 9.0 | 41.0 | 30.0 | 20.0 | 12.120 | O | 1 |
| 6691 | 8.0 | 42.0 | 30.0 | 20.0 | 11.702 | O | 1 |
| 6692 | 7.0 | 43.0 | 30.0 | 20.0 | 11.285 | O | 1 |
| 6693 | 6.0 | 44.0 | 30.0 | 20.0 | 10.867 | O | 1 |
| 6694 | 5.0 | 45.0 | 30.0 | 20.0 | 10.449 | O | 1 |
| 6695 | 4.0 | 46.0 | 30.0 | 20.0 | 10.031 | O | 1 |
| 6696 | 3.0 | 47.0 | 30.0 | 20.0 | 9.613 | O | 1 |
| 6697 | 2.0 | 48.0 | 30.0 | 20.0 | 9.195 | O | 1 |
| 6698 | 1.0 | 49.0 | 30.0 | 20.0 | 8.777 | O | 1 |
| 6699 | 0.0 | 50.0 | 30.0 | 20.0 | 8.359 | O | 1 |
| 6700 | 29.0 | 16.0 | 35.0 | 20.0 | 19.346 | X | 1 |
| 6701 | 28.1 | 16.9 | 35.0 | 20.0 | 19.025 | X | 1 |
| 6702 | 28.0 | 17.0 | 35.0 | 20.0 | 18.989 | O | 1 |
| 6703 | 20.0 | 25.0 | 35.0 | 20.0 | 16.134 | O | 1 |
| 6704 | 10.0 | 35.0 | 35.0 | 20.0 | 12.566 | O | 1 |
| 6705 | 9.0 | 36.0 | 35.0 | 20.0 | 12.160 | O | 1 |
| 6706 | 8.0 | 37.0 | 35.0 | 20.0 | 11.743 | O | 1 |
| 6707 | 7.0 | 38.0 | 35.0 | 20.0 | 11.325 | O | 1 |
| 6708 | 6.0 | 39.0 | 35.0 | 20.0 | 10.907 | O | 1 |
| 6709 | 5.0 | 40.0 | 35.0 | 20.0 | 10.489 | O | 1 |
| 6710 | 4.0 | 41.0 | 35.0 | 20.0 | 10.071 | O | 1 |
| 6711 | 3.0 | 42.0 | 35.0 | 20.0 | 9.653 | O | 1 |
| 6712 | 2.0 | 43.0 | 35.0 | 20.0 | 9.235 | O | 1 |
| 6713 | 1.0 | 44.0 | 35.0 | 20.0 | 8.817 | O | 1 |
| 6714 | 0.0 | 45.0 | 35.0 | 20.0 | 8.399 | O | 1 |
| 6715 | 28.0 | 12.0 | 40.0 | 20.0 | 19.019 | X | 1 |
| 6716 | 27.9 | 12.1 | 40.0 | 20.0 | 18.983 | O | 1 |
| 6717 | 27.0 | 13.0 | 40.0 | 20.0 | 18.662 | O | 1 |
| 6718 | 20.0 | 20.0 | 40.0 | 20.0 | 16.164 | O | 1 |
| 6719 | 10.0 | 30.0 | 40.0 | 20.0 | 12.596 | O | 1 |
| 6720 | 9.0 | 31.0 | 40.0 | 20.0 | 12.201 | O | 1 |
| 6721 | 8.0 | 32.0 | 40.0 | 20.0 | 11.783 | O | 1 |
| 6722 | 7.0 | 33.0 | 40.0 | 20.0 | 11.365 | O | 1 |
| 6723 | 6.0 | 34.0 | 40.0 | 20.0 | 10.947 | O | 1 |
| 6724 | 5.0 | 35.0 | 40.0 | 20.0 | 10.529 | O | 1 |
| 6725 | 4.0 | 36.0 | 40.0 | 20.0 | 10.111 | O | 1 |
| 6726 | 3.0 | 37.0 | 40.0 | 20.0 | 9.693 | O | 1 |
| 6727 | 2.0 | 38.0 | 40.0 | 20.0 | 9.275 | O | 1 |
| 6728 | 1.0 | 39.0 | 40.0 | 20.0 | 8.857 | O | 1 |

[Table 115]

| 6729 | 0.0 | 40.0 | 40.0 | 20.0 | 8.439 | O | 1 |
|------|-----|------|------|------|--------|---|---|
| 6730 | 28.0 | 7.0 | 45.0 | 20.0 | 19.049 | X | 1 |
| 6731 | 27.9 | 7.1 | 45.0 | 20.0 | 19.013 | X | 1 |
| 6732 | 27.8 | 7.2 | 45.0 | 20.0 | 18.978 | O | 1 |
| 6733 | 27.0 | 8.0 | 45.0 | 20.0 | 18.692 | O | 1 |
| 6734 | 20.0 | 15.0 | 45.0 | 20.0 | 16.194 | O | 1 |
| 6735 | 10.0 | 25.0 | 45.0 | 20.0 | 12.626 | O | 1 |
| 6736 | 9.0 | 26.0 | 45.0 | 20.0 | 12.241 | O | 1 |
| 6737 | 8.0 | 27.0 | 45.0 | 20.0 | 11.823 | O | 1 |
| 6738 | 7.0 | 28.0 | 45.0 | 20.0 | 11.405 | O | 1 |
| 6739 | 6.0 | 29.0 | 45.0 | 20.0 | 10.987 | O | 1 |
| 6740 | 5.0 | 30.0 | 45.0 | 20.0 | 10.569 | O | 1 |
| 6741 | 4.0 | 31.0 | 45.0 | 20.0 | 10.151 | O | 1 |
| 6742 | 3.0 | 32.0 | 45.0 | 20.0 | 9.733 | O | 1 |
| 6743 | 2.0 | 33.0 | 45.0 | 20.0 | 9.315 | O | 1 |
| 6744 | 1.0 | 34.0 | 45.0 | 20.0 | 8.897 | O | 1 |
| 6745 | 0.0 | 35.0 | 45.0 | 20.0 | 8.479 | O | 1 |
| 6746 | 28.0 | 2.0 | 50.0 | 20.0 | 19.079 | X | 1 |
| 6747 | 27.8 | 2.2 | 50.0 | 20.0 | 19.008 | X | 1 |
| 6748 | 27.7 | 2.3 | 50.0 | 20.0 | 18.972 | O | 1 |
| 6749 | 27.0 | 3.0 | 50.0 | 20.0 | 18.722 | O | 1 |
| 6750 | 20.0 | 10.0 | 50.0 | 20.0 | 16.224 | O | 1 |
| 6751 | 10.0 | 20.0 | 50.0 | 20.0 | 12.656 | O | 1 |
| 6752 | 9.0 | 21.0 | 50.0 | 20.0 | 12.281 | O | 1 |
| 6753 | 8.0 | 22.0 | 50.0 | 20.0 | 11.863 | O | 1 |
| 6754 | 7.0 | 23.0 | 50.0 | 20.0 | 11.445 | O | 1 |
| 6755 | 6.0 | 24.0 | 50.0 | 20.0 | 11.027 | O | 1 |
| 6756 | 5.0 | 25.0 | 50.0 | 20.0 | 10.609 | O | 1 |
| 6757 | 4.0 | 26.0 | 50.0 | 20.0 | 10.191 | O | 1 |
| 6758 | 3.0 | 27.0 | 50.0 | 20.0 | 9.773 | O | 1 |
| 6759 | 2.0 | 28.0 | 50.0 | 20.0 | 9.355 | O | 1 |
| 6760 | 1.0 | 29.0 | 50.0 | 20.0 | 8.938 | O | 1 |
| 6761 | 0.0 | 30.0 | 50.0 | 20.0 | 8.520 | O | 1 |
| 6762 | 32.0 | 33.0 | 5.0 | 30.0 | 19.304 | X | 1 |
| 6763 | 31.2 | 33.8 | 5.0 | 30.0 | 19.019 | X | 1 |
| 6764 | 31.1 | 33.9 | 5.0 | 30.0 | 18.983 | O | 1 |
| 6765 | 31.0 | 34.0 | 5.0 | 30.0 | 18.947 | O | 1 |
| 6766 | 30.0 | 35.0 | 5.0 | 30.0 | 18.591 | O | 1 |
| 6767 | 20.0 | 45.0 | 5.0 | 30.0 | 15.022 | O | 1 |
| 6768 | 10.0 | 55.0 | 5.0 | 30.0 | 11.432 | O | 1 |
| 6769 | 9.0 | 56.0 | 5.0 | 30.0 | 11.014 | O | 1 |
| 6770 | 8.0 | 57.0 | 5.0 | 30.0 | 10.596 | O | 1 |
| 6771 | 7.0 | 58.0 | 5.0 | 30.0 | 10.179 | O | 1 |
| 6772 | 6.0 | 59.0 | 5.0 | 30.0 | 9.761 | O | 1 |
| 6773 | 5.0 | 60.0 | 5.0 | 30.0 | 9.343 | O | 1 |
| 6774 | 4.0 | 61.0 | 5.0 | 30.0 | 8.925 | O | 1 |
| 6775 | 3.0 | 62.0 | 5.0 | 30.0 | 8.507 | O | 1 |
| 6776 | 2.0 | 63.0 | 5.0 | 30.0 | 8.089 | O | 1 |
| 6777 | 1.0 | 64.0 | 5.0 | 30.0 | 7.671 | O | 1 |
| 6778 | 0.0 | 65.0 | 5.0 | 30.0 | 7.253 | O | 1 |

[Table 116]

| 6779 | 32.0 | 28.0 | 10.0 | 30.0 | 19.334 | X | 1 |
|------|------|------|------|------|--------|---|---|
| 6780 | 31.1 | 28.9 | 10.0 | 30.0 | 19.013 | X | 1 |
| 6781 | 31.0 | 29.0 | 10.0 | 30.0 | 18.977 | O | 1 |
| 6782 | 30.0 | 30.0 | 10.0 | 30.0 | 18.621 | O | 1 |
| 6783 | 20.0 | 40.0 | 10.0 | 30.0 | 15.052 | O | 1 |
| 6784 | 10.0 | 50.0 | 10.0 | 30.0 | 11.472 | O | 1 |
| 6785 | 9.0 | 51.0 | 10.0 | 30.0 | 11.055 | O | 1 |
| 6786 | 8.0 | 52.0 | 10.0 | 30.0 | 10.637 | O | 1 |
| 6787 | 7.0 | 53.0 | 10.0 | 30.0 | 10.219 | O | 1 |
| 6788 | 6.0 | 54.0 | 10.0 | 30.0 | 9.801 | O | 1 |
| 6789 | 5.0 | 55.0 | 10.0 | 30.0 | 9.383 | O | 1 |
| 6790 | 4.0 | 56.0 | 10.0 | 30.0 | 8.965 | O | 1 |
| 6791 | 3.0 | 57.0 | 10.0 | 30.0 | 8.547 | O | 1 |
| 6792 | 2.0 | 58.0 | 10.0 | 30.0 | 8.129 | O | 1 |
| 6793 | 1.0 | 59.0 | 10.0 | 30.0 | 7.711 | O | 1 |
| 6794 | 0.0 | 60.0 | 10.0 | 30.0 | 7.293 | O | 1 |
| 6795 | 31.0 | 24.0 | 15.0 | 30.0 | 19.007 | X | 1 |
| 6796 | 30.9 | 24.1 | 15.0 | 30.0 | 18.972 | O | 1 |
| 6797 | 30.0 | 25.0 | 15.0 | 30.0 | 18.650 | O | 1 |
| 6798 | 20.0 | 35.0 | 15.0 | 30.0 | 15.082 | O | 1 |
| 6799 | 10.0 | 45.0 | 15.0 | 30.0 | 11.513 | O | 1 |
| 6800 | 9.0 | 46.0 | 15.0 | 30.0 | 11.095 | O | 1 |
| 6801 | 8.0 | 47.0 | 15.0 | 30.0 | 10.677 | O | 1 |
| 6802 | 7.0 | 48.0 | 15.0 | 30.0 | 10.259 | O | 1 |
| 6803 | 6.0 | 49.0 | 15.0 | 30.0 | 9.841 | O | 1 |
| 6804 | 5.0 | 50.0 | 15.0 | 30.0 | 9.423 | O | 1 |
| 6805 | 4.0 | 51.0 | 15.0 | 30.0 | 9.005 | O | 1 |
| 6806 | 3.0 | 52.0 | 15.0 | 30.0 | 8.587 | O | 1 |
| 6807 | 2.0 | 53.0 | 15.0 | 30.0 | 8.169 | O | 1 |
| 6808 | 1.0 | 54.0 | 15.0 | 30.0 | 7.751 | O | 1 |
| 6809 | 0.0 | 55.0 | 15.0 | 30.0 | 7.333 | O | 1 |
| 6810 | 31.0 | 19.0 | 20.0 | 30.0 | 19.037 | X | 1 |
| 6811 | 30.9 | 19.1 | 20.0 | 30.0 | 19.002 | X | 1 |
| 6812 | 30.8 | 19.2 | 20.0 | 30.0 | 18.966 | O | 1 |
| 6813 | 30.0 | 20.0 | 20.0 | 30.0 | 18.680 | O | 1 |
| 6814 | 20.0 | 30.0 | 20.0 | 30.0 | 15.112 | O | 1 |
| 6815 | 10.0 | 40.0 | 20.0 | 30.0 | 11.544 | O | 1 |
| 6816 | 9.0 | 41.0 | 20.0 | 30.0 | 11.135 | O | 1 |
| 6817 | 8.0 | 42.0 | 20.0 | 30.0 | 10.717 | O | 1 |
| 6818 | 7.0 | 43.0 | 20.0 | 30.0 | 10.299 | O | 1 |
| 6819 | 6.0 | 44.0 | 20.0 | 30.0 | 9.881 | O | 1 |
| 6820 | 5.0 | 45.0 | 20.0 | 30.0 | 9.463 | O | 1 |
| 6821 | 4.0 | 46.0 | 20.0 | 30.0 | 9.045 | O | 1 |
| 6822 | 3.0 | 47.0 | 20.0 | 30.0 | 8.627 | O | 1 |
| 6823 | 2.0 | 48.0 | 20.0 | 30.0 | 8.209 | O | 1 |
| 6824 | 1.0 | 49.0 | 20.0 | 30.0 | 7.791 | O | 1 |
| 6825 | 0.0 | 50.0 | 20.0 | 30.0 | 7.374 | O | 1 |
| 6826 | 31.0 | 14.0 | 25.0 | 30.0 | 19.067 | X | 1 |
| 6827 | 30.9 | 14.1 | 25.0 | 30.0 | 19.032 | X | 1 |
| 6828 | 30.8 | 14.2 | 25.0 | 30.0 | 18.996 | O | 1 |

[Table 117]

| 6829 | 30.0 | 15.0 | 25.0 | 30.0 | 18.710 | O | 1 |
|------|------|------|------|------|--------|---|---|
| 6830 | 20.0 | 25.0 | 25.0 | 30.0 | 15.142 | O | 1 |
| 6831 | 10.0 | 35.0 | 25.0 | 30.0 | 11.574 | O | 1 |
| 6832 | 9.0 | 36.0 | 25.0 | 30.0 | 11.175 | O | 1 |
| 6833 | 8.0 | 37.0 | 25.0 | 30.0 | 10.757 | O | 1 |
| 6834 | 7.0 | 38.0 | 25.0 | 30.0 | 10.339 | O | 1 |
| 6835 | 6.0 | 39.0 | 25.0 | 30.0 | 9.921 | O | 1 |
| 6836 | 5.0 | 40.0 | 25.0 | 30.0 | 9.503 | O | 1 |
| 6837 | 4.0 | 41.0 | 25.0 | 30.0 | 9.085 | O | 1 |
| 6838 | 3.0 | 42.0 | 25.0 | 30.0 | 8.667 | O | 1 |
| 6839 | 2.0 | 43.0 | 25.0 | 30.0 | 8.250 | O | 1 |
| 6840 | 1.0 | 44.0 | 25.0 | 30.0 | 7.832 | O | 1 |
| 6841 | 0.0 | 45.0 | 25.0 | 30.0 | 7.414 | O | 1 |
| 6842 | 31.0 | 9.0 | 30.0 | 30.0 | 19.097 | X | 1 |
| 6843 | 30.8 | 9.2 | 30.0 | 30.0 | 19.026 | X | 1 |
| 6844 | 30.7 | 9.3 | 30.0 | 30.0 | 18.990 | O | 1 |
| 6845 | 30.0 | 10.0 | 30.0 | 30.0 | 18.740 | O | 1 |
| 6846 | 20.0 | 20.0 | 30.0 | 30.0 | 15.172 | O | 1 |
| 6847 | 10.0 | 30.0 | 30.0 | 30.0 | 11.604 | O | 1 |
| 6848 | 9.0 | 31.0 | 30.0 | 30.0 | 11.215 | O | 1 |
| 6849 | 8.0 | 32.0 | 30.0 | 30.0 | 10.797 | O | 1 |
| 6850 | 7.0 | 33.0 | 30.0 | 30.0 | 10.379 | O | 1 |
| 6851 | 6.0 | 34.0 | 30.0 | 30.0 | 9.961 | O | 1 |
| 6852 | 5.0 | 35.0 | 30.0 | 30.0 | 9.543 | O | 1 |
| 6853 | 4.0 | 36.0 | 30.0 | 30.0 | 9.125 | O | 1 |
| 6854 | 3.0 | 37.0 | 30.0 | 30.0 | 8.708 | O | 1 |
| 6855 | 2.0 | 38.0 | 30.0 | 30.0 | 8.290 | O | 1 |
| 6856 | 1.0 | 39.0 | 30.0 | 30.0 | 7.872 | O | 1 |
| 6857 | 0.0 | 40.0 | 30.0 | 30.0 | 7.454 | O | 1 |
| 6858 | 31.0 | 4.0 | 35.0 | 30.0 | 19.127 | X | 1 |
| 6859 | 30.7 | 4.3 | 35.0 | 30.0 | 19.020 | X | 1 |
| 6860 | 30.6 | 4.4 | 35.0 | 30.0 | 18.984 | O | 1 |
| 6861 | 30.0 | 5.0 | 35.0 | 30.0 | 18.770 | O | 1 |
| 6862 | 20.0 | 15.0 | 35.0 | 30.0 | 15.202 | O | 1 |
| 6863 | 10.0 | 25.0 | 35.0 | 30.0 | 11.634 | O | 1 |
| 6864 | 9.0 | 26.0 | 35.0 | 30.0 | 11.255 | O | 1 |
| 6865 | 8.0 | 27.0 | 35.0 | 30.0 | 10.837 | O | 1 |
| 6866 | 7.0 | 28.0 | 35.0 | 30.0 | 10.419 | O | 1 |
| 6867 | 6.0 | 29.0 | 35.0 | 30.0 | 10.001 | O | 1 |
| 6868 | 5.0 | 30.0 | 35.0 | 30.0 | 9.584 | O | 1 |
| 6869 | 4.0 | 31.0 | 35.0 | 30.0 | 9.166 | O | 1 |
| 6870 | 3.0 | 32.0 | 35.0 | 30.0 | 8.748 | O | 1 |
| 6871 | 2.0 | 33.0 | 35.0 | 30.0 | 8.330 | O | 1 |
| 6872 | 1.0 | 34.0 | 35.0 | 30.0 | 7.912 | O | 1 |
| 6873 | 0.0 | 35.0 | 35.0 | 30.0 | 7.494 | O | 1 |
| 6874 | 34.0 | 21.0 | 5.0 | 40.0 | 19.086 | X | 1 |
| 6875 | 33.8 | 21.2 | 5.0 | 40.0 | 19.014 | X | 1 |
| 6876 | 33.7 | 21.3 | 5.0 | 40.0 | 18.979 | O | 1 |
| 6877 | 33.0 | 22.0 | 5.0 | 40.0 | 18.729 | O | 1 |
| 6878 | 30.0 | 25.0 | 5.0 | 40.0 | 17.658 | O | 1 |

[Table 118]

| 6879 | 20.0 | 35.0 | 5.0 | 40.0 | 14.090 | O | 1 |
|---|---|---|---|---|---|---|---|
| 6880 | 10.0 | 45.0 | 5.0 | 40.0 | 10.522 | O | 1 |
| 6881 | 9.0 | 46.0 | 5.0 | 40.0 | 10.109 | O | 1 |
| 6882 | 8.0 | 47.0 | 5.0 | 40.0 | 9.691 | O | 1 |
| 6883 | 7.0 | 48.0 | 5.0 | 40.0 | 9.273 | O | 1 |
| 6884 | 6.0 | 49.0 | 5.0 | 40.0 | 8.855 | O | 1 |
| 6885 | 5.0 | 50.0 | 5.0 | 40.0 | 8.437 | O | 1 |
| 6886 | 4.0 | 51.0 | 5.0 | 40.0 | 8.020 | O | 1 |
| 6887 | 3.0 | 52.0 | 5.0 | 40.0 | 7.602 | O | 1 |
| 6888 | 2.0 | 53.0 | 5.0 | 40.0 | 7.184 | O | 1 |
| 6889 | 1.0 | 54.0 | 5.0 | 40.0 | 6.766 | O | 1 |
| 6890 | 0.0 | 55.0 | 5.0 | 40.0 | 6.348 | O | 1 |
| 6891 | 34.0 | 16.0 | 10.0 | 40.0 | 19.116 | X | 1 |
| 6892 | 33.7 | 16.3 | 10.0 | 40.0 | 19.009 | X | 1 |
| 6893 | 33.6 | 16.4 | 10.0 | 40.0 | 18.973 | O | 1 |
| 6894 | 33.0 | 17.0 | 10.0 | 40.0 | 18.759 | O | 1 |
| 6895 | 30.0 | 20.0 | 10.0 | 40.0 | 17.688 | O | 1 |
| 6896 | 20.0 | 30.0 | 10.0 | 40.0 | 14.120 | O | 1 |
| 6897 | 10.0 | 40.0 | 10.0 | 40.0 | 10.552 | O | 1 |
| 6898 | 9.0 | 41.0 | 10.0 | 40.0 | 10.149 | O | 1 |
| 6899 | 8.0 | 42.0 | 10.0 | 40.0 | 9.731 | O | 1 |
| 6900 | 7.0 | 43.0 | 10.0 | 40.0 | 9.313 | O | 1 |
| 6901 | 6.0 | 44.0 | 10.0 | 40.0 | 8.896 | O | 1 |
| 6902 | 5.0 | 45.0 | 10.0 | 40.0 | 8.478 | O | 1 |
| 6903 | 4.0 | 46.0 | 10.0 | 40.0 | 8.060 | O | 1 |
| 6904 | 3.0 | 47.0 | 10.0 | 40.0 | 7.642 | O | 1 |
| 6905 | 2.0 | 48.0 | 10.0 | 40.0 | 7.224 | O | 1 |
| 6906 | 1.0 | 49.0 | 10.0 | 40.0 | 6.806 | O | 1 |
| 6907 | 0.0 | 50.0 | 10.0 | 40.0 | 6.388 | O | 1 |
| 6908 | 34.0 | 11.0 | 15.0 | 40.0 | 19.146 | X | 1 |
| 6909 | 33.6 | 11.4 | 15.0 | 40.0 | 19.003 | X | 1 |
| 6910 | 33.5 | 11.5 | 15.0 | 40.0 | 18.967 | O | 1 |
| 6911 | 33.0 | 12.0 | 15.0 | 40.0 | 18.789 | O | 1 |
| 6912 | 30.0 | 15.0 | 15.0 | 40.0 | 17.718 | O | 1 |
| 6913 | 20.0 | 25.0 | 15.0 | 40.0 | 14.150 | O | 1 |
| 6914 | 10.0 | 35.0 | 15.0 | 40.0 | 10.582 | O | 1 |
| 6915 | 9.0 | 36.0 | 15.0 | 40.0 | 10.189 | O | 1 |
| 6916 | 8.0 | 37.0 | 15.0 | 40.0 | 9.771 | O | 1 |
| 6917 | 7.0 | 38.0 | 15.0 | 40.0 | 9.354 | O | 1 |
| 6918 | 6.0 | 39.0 | 15.0 | 40.0 | 8.936 | O | 1 |
| 6919 | 5.0 | 40.0 | 15.0 | 40.0 | 8.518 | O | 1 |
| 6920 | 4.0 | 41.0 | 15.0 | 40.0 | 8.100 | O | 1 |
| 6921 | 3.0 | 42.0 | 15.0 | 40.0 | 7.682 | O | 1 |
| 6922 | 2.0 | 43.0 | 15.0 | 40.0 | 7.264 | O | 1 |
| 6923 | 1.0 | 44.0 | 15.0 | 40.0 | 6.846 | O | 1 |
| 6924 | 0.0 | 45.0 | 15.0 | 40.0 | 6.428 | O | 1 |
| 6925 | 34.0 | 6.0 | 20.0 | 40.0 | 19.176 | X | 1 |
| 6926 | 33.6 | 6.4 | 20.0 | 40.0 | 19.033 | X | 1 |
| 6927 | 33.5 | 6.5 | 20.0 | 40.0 | 18.997 | O | 1 |
| 6928 | 33.0 | 7.0 | 20.0 | 40.0 | 18.819 | O | 1 |

[Table 119]

| | | | | | | | |
|---|---|---|---|---|---|---|---|
| 6929 | 30.0 | 10.0 | 20.0 | 40.0 | 17.748 | O | 1 |
| 6930 | 20.0 | 20.0 | 20.0 | 40.0 | 14.180 | O | 1 |
| 6931 | 10.0 | 30.0 | 20.0 | 40.0 | 10.612 | O | 1 |
| 6932 | 9.0 | 31.0 | 20.0 | 40.0 | 10.230 | O | 1 |
| 6933 | 8.0 | 32.0 | 20.0 | 40.0 | 9.812 | O | 1 |
| 6934 | 7.0 | 33.0 | 20.0 | 40.0 | 9.394 | O | 1 |
| 6935 | 6.0 | 34.0 | 20.0 | 40.0 | 8.976 | O | 1 |
| 6936 | 5.0 | 35.0 | 20.0 | 40.0 | 8.558 | O | 1 |
| 6937 | 4.0 | 36.0 | 20.0 | 40.0 | 8.140 | O | 1 |
| 6938 | 3.0 | 37.0 | 20.0 | 40.0 | 7.722 | O | 1 |
| 6939 | 2.0 | 38.0 | 20.0 | 40.0 | 7.304 | O | 1 |
| 6940 | 1.0 | 39.0 | 20.0 | 40.0 | 6.886 | O | 1 |
| 6941 | 0.0 | 40.0 | 20.0 | 40.0 | 6.468 | O | 1 |
| 6942 | 34.0 | 1.0 | 25.0 | 40.0 | 19.206 | X | 1 |
| 6943 | 33.5 | 1.5 | 25.0 | 40.0 | 19.027 | X | 1 |
| 6944 | 33.4 | 1.6 | 25.0 | 40.0 | 18.991 | O | 1 |
| 6945 | 33.0 | 2.0 | 25.0 | 40.0 | 18.849 | O | 1 |
| 6946 | 30.0 | 5.0 | 25.0 | 40.0 | 17.778 | O | 1 |
| 6947 | 20.0 | 15.0 | 25.0 | 40.0 | 14.210 | O | 1 |
| 6948 | 10.0 | 25.0 | 25.0 | 40.0 | 10.642 | O | 1 |
| 6949 | 9.0 | 26.0 | 25.0 | 40.0 | 10.270 | O | 1 |
| 6950 | 8.0 | 27.0 | 25.0 | 40.0 | 9.852 | O | 1 |
| 6951 | 7.0 | 28.0 | 25.0 | 40.0 | 9.434 | O | 1 |
| 6952 | 6.0 | 29.0 | 25.0 | 40.0 | 9.016 | O | 1 |
| 6953 | 5.0 | 30.0 | 25.0 | 40.0 | 8.598 | O | 1 |
| 6954 | 4.0 | 31.0 | 25.0 | 40.0 | 8.180 | O | 1 |
| 6955 | 3.0 | 32.0 | 25.0 | 40.0 | 7.762 | O | 1 |
| 6956 | 2.0 | 33.0 | 25.0 | 40.0 | 7.344 | O | 1 |
| 6957 | 1.0 | 34.0 | 25.0 | 40.0 | 6.926 | O | 1 |
| 6958 | 0.0 | 35.0 | 25.0 | 40.0 | 6.508 | O | 1 |
| 6959 | 37.0 | 8.0 | 5.0 | 50.0 | 19.224 | X | 1 |
| 6960 | 36.4 | 8.6 | 5.0 | 50.0 | 19.010 | X | 1 |
| 6961 | 36.3 | 8.7 | 5.0 | 50.0 | 18.974 | O | 1 |
| 6962 | 36.0 | 9.0 | 5.0 | 50.0 | 18.867 | O | 1 |
| 6963 | 30.0 | 15.0 | 5.0 | 50.0 | 16.726 | O | 1 |
| 6964 | 20.0 | 25.0 | 5.0 | 50.0 | 13.158 | O | 1 |
| 6965 | 10.0 | 35.0 | 5.0 | 50.0 | 9.590 | O | 1 |
| 6966 | 9.0 | 36.0 | 5.0 | 50.0 | 9.204 | O | 1 |
| 6967 | 8.0 | 37.0 | 5.0 | 50.0 | 8.786 | O | 1 |
| 6968 | 7.0 | 38.0 | 5.0 | 50.0 | 8.368 | O | 1 |
| 6969 | 6.0 | 39.0 | 5.0 | 50.0 | 7.950 | O | 1 |
| 6970 | 5.0 | 40.0 | 5.0 | 50.0 | 7.532 | O | 1 |
| 6971 | 4.0 | 41.0 | 5.0 | 50.0 | 7.114 | O | 1 |
| 6972 | 3.0 | 42.0 | 5.0 | 50.0 | 6.696 | O | 1 |
| 6973 | 2.0 | 43.0 | 5.0 | 50.0 | 6.278 | O | 1 |
| 6974 | 1.0 | 44.0 | 5.0 | 50.0 | 5.861 | O | 1 |
| 6975 | 0.0 | 45.0 | 5.0 | 50.0 | 5.443 | O | 1 |
| 6976 | 37.0 | 3.0 | 10.0 | 50.0 | 19.254 | X | 1 |
| 6977 | 36.3 | 3.7 | 10.0 | 50.0 | 19.004 | X | 1 |
| 6978 | 36.2 | 3.8 | 10.0 | 50.0 | 18.968 | O | 1 |

[Table 120]

| 6979 | 36.0 | 4.0 | 10.0 | 50.0 | 18.897 | O | 1 |
|------|------|------|------|------|--------|---|---|
| 6980 | 30.0 | 10.0 | 10.0 | 50.0 | 16.756 | O | 1 |
| 6981 | 20.0 | 20.0 | 10.0 | 50.0 | 13.188 | O | 1 |
| 6982 | 10.0 | 30.0 | 10.0 | 50.0 | 9.620 | O | 1 |
| 6983 | 9.0 | 31.0 | 10.0 | 50.0 | 9.244 | O | 1 |
| 6984 | 8.0 | 32.0 | 10.0 | 50.0 | 8.826 | O | 1 |
| 6985 | 7.0 | 33.0 | 10.0 | 50.0 | 8.408 | O | 1 |
| 6986 | 6.0 | 34.0 | 10.0 | 50.0 | 7.990 | O | 1 |
| 6987 | 5.0 | 35.0 | 10.0 | 50.0 | 7.572 | O | 1 |
| 6988 | 4.0 | 36.0 | 10.0 | 50.0 | 7.154 | O | 1 |
| 6989 | 3.0 | 37.0 | 10.0 | 50.0 | 6.737 | O | 1 |
| 6990 | 2.0 | 38.0 | 10.0 | 50.0 | 6.319 | O | 1 |
| 6991 | 1.0 | 39.0 | 10.0 | 50.0 | 5.901 | O | 1 |
| 6992 | 0.0 | 40.0 | 10.0 | 50.0 | 5.483 | O | 1 |

Tables 121 to 144 show the composition, combustion heat amount, and GWP of the working medium of a four-component system of propane, HFO-1123, HFO-1234ze(E), and HFC-32.

[Table 121]

| Case | propane | HFO-1123 | HFO-1234ze(E) | HFC-32 | Heat of Combustion | Evaluation | GWP |
|---|---|---|---|---|---|---|---|
| 6993 | 24.0 | 69.0 | 5.0 | 2.0 | 19.194 | X | 15 |
| 6994 | 23.6 | 69.4 | 5.0 | 2.0 | 19.052 | X | 15 |
| 6995 | 23.5 | 69.5 | 5.0 | 2.0 | 19.016 | X | 15 |
| 6996 | 23.0 | 70.0 | 5.0 | 2.0 | 18.838 | O | 15 |
| 6997 | 20.0 | 73.0 | 5.0 | 2.0 | 17.767 | O | 15 |
| 6998 | 10.0 | 83.0 | 5.0 | 2.0 | 14.111 | O | 15 |
| 6999 | 9.0 | 84.0 | 5.0 | 2.0 | 13.693 | O | 15 |
| 7000 | 8.0 | 85.0 | 5.0 | 2.0 | 13.275 | O | 15 |
| 7001 | 7.0 | 86.0 | 5.0 | 2.0 | 12.857 | O | 15 |
| 7002 | 6.0 | 87.0 | 5.0 | 2.0 | 12.439 | O | 15 |
| 7003 | 5.0 | 88.0 | 5.0 | 2.0 | 12.021 | O | 15 |
| 7004 | 4.0 | 89.0 | 5.0 | 2.0 | 11.603 | O | 15 |
| 7005 | 3.0 | 90.0 | 5.0 | 2.0 | 11.185 | O | 15 |
| 7006 | 2.0 | 91.0 | 5.0 | 2.0 | 10.767 | O | 15 |
| 7007 | 1.0 | 92.0 | 5.0 | 2.0 | 10.350 | O | 15 |
| 7008 | 0.0 | 93.0 | 5.0 | 2.0 | 9.932 | O | 15 |
| 7009 | 24.0 | 64.0 | 10.0 | 2.0 | 19.195 | X | 15 |
| 7010 | 23.5 | 64.5 | 10.0 | 2.0 | 19.016 | X | 15 |
| 7011 | 23.4 | 64.6 | 10.0 | 2.0 | 18.981 | O | 15 |
| 7012 | 23.0 | 65.0 | 10.0 | 2.0 | 18.838 | O | 15 |
| 7013 | 20.0 | 68.0 | 10.0 | 2.0 | 17.767 | O | 15 |
| 7014 | 10.0 | 78.0 | 10.0 | 2.0 | 14.121 | O | 15 |
| 7015 | 9.0 | 79.0 | 10.0 | 2.0 | 13.703 | O | 15 |
| 7016 | 8.0 | 80.0 | 10.0 | 2.0 | 13.285 | O | 15 |
| 7017 | 7.0 | 81.0 | 10.0 | 2.0 | 12.868 | O | 15 |
| 7018 | 6.0 | 82.0 | 10.0 | 2.0 | 12.450 | O | 15 |
| 7019 | 5.0 | 83.0 | 10.0 | 2.0 | 12.032 | O | 15 |
| 7020 | 4.0 | 84.0 | 10.0 | 2.0 | 11.614 | O | 15 |
| 7021 | 3.0 | 85.0 | 10.0 | 2.0 | 11.196 | O | 15 |
| 7022 | 2.0 | 86.0 | 10.0 | 2.0 | 10.778 | O | 15 |
| 7023 | 1.0 | 87.0 | 10.0 | 2.0 | 10.360 | O | 15 |
| 7024 | 0.0 | 88.0 | 10.0 | 2.0 | 9.942 | O | 15 |
| 7025 | 24.0 | 59.0 | 15.0 | 2.0 | 19.195 | X | 15 |
| 7026 | 23.5 | 59.5 | 15.0 | 2.0 | 19.017 | X | 15 |
| 7027 | 23.4 | 59.6 | 15.0 | 2.0 | 18.981 | O | 15 |
| 7028 | 23.0 | 60.0 | 15.0 | 2.0 | 18.838 | O | 15 |
| 7029 | 20.0 | 63.0 | 15.0 | 2.0 | 17.768 | O | 15 |
| 7030 | 10.0 | 73.0 | 15.0 | 2.0 | 14.132 | O | 15 |
| 7031 | 9.0 | 74.0 | 15.0 | 2.0 | 13.714 | O | 15 |
| 7032 | 8.0 | 75.0 | 15.0 | 2.0 | 13.296 | O | 15 |
| 7033 | 7.0 | 76.0 | 15.0 | 2.0 | 12.878 | O | 15 |
| 7034 | 6.0 | 77.0 | 15.0 | 2.0 | 12.460 | O | 15 |
| 7035 | 5.0 | 78.0 | 15.0 | 2.0 | 12.042 | O | 15 |
| 7036 | 4.0 | 79.0 | 15.0 | 2.0 | 11.624 | O | 15 |
| 7037 | 3.0 | 80.0 | 15.0 | 2.0 | 11.206 | O | 15 |
| 7038 | 2.0 | 81.0 | 15.0 | 2.0 | 10.788 | O | 15 |
| 7039 | 1.0 | 82.0 | 15.0 | 2.0 | 10.370 | O | 15 |
| 7040 | 0.0 | 83.0 | 15.0 | 2.0 | 9.953 | O | 15 |
| 7041 | 24.0 | 54.0 | 20.0 | 2.0 | 19.195 | X | 15 |
| 7042 | 23.5 | 54.5 | 20.0 | 2.0 | 19.017 | X | 15 |

[Table 122]

| 7043 | 23.4 | 54.6 | 20.0 | 2.0 | 18.981 | O | 15 |
|------|------|------|------|-----|--------|---|----|
| 7044 | 23.0 | 55.0 | 20.0 | 2.0 | 18.839 | O | 15 |
| 7045 | 20.0 | 58.0 | 20.0 | 2.0 | 17.768 | O | 15 |
| 7046 | 10.0 | 68.0 | 20.0 | 2.0 | 14.142 | O | 15 |
| 7047 | 9.0 | 69.0 | 20.0 | 2.0 | 13.724 | O | 15 |
| 7048 | 8.0 | 70.0 | 20.0 | 2.0 | 13.306 | O | 15 |
| 7049 | 7.0 | 71.0 | 20.0 | 2.0 | 12.888 | O | 15 |
| 7050 | 6.0 | 72.0 | 20.0 | 2.0 | 12.470 | O | 15 |
| 7051 | 5.0 | 73.0 | 20.0 | 2.0 | 12.053 | O | 15 |
| 7052 | 4.0 | 74.0 | 20.0 | 2.0 | 11.635 | O | 15 |
| 7053 | 3.0 | 75.0 | 20.0 | 2.0 | 11.217 | O | 15 |
| 7054 | 2.0 | 76.0 | 20.0 | 2.0 | 10.799 | O | 15 |
| 7055 | 1.0 | 77.0 | 20.0 | 2.0 | 10.381 | O | 15 |
| 7056 | 0.0 | 78.0 | 20.0 | 2.0 | 9.963 | O | 15 |
| 7057 | 24.0 | 49.0 | 25.0 | 2.0 | 19.196 | X | 15 |
| 7058 | 23.5 | 49.5 | 25.0 | 2.0 | 19.017 | X | 15 |
| 7059 | 23.4 | 49.6 | 25.0 | 2.0 | 18.982 | O | 15 |
| 7060 | 23.0 | 50.0 | 25.0 | 2.0 | 18.839 | O | 15 |
| 7061 | 20.0 | 53.0 | 25.0 | 2.0 | 17.768 | O | 15 |
| 7062 | 10.0 | 63.0 | 25.0 | 2.0 | 14.153 | O | 15 |
| 7063 | 9.0 | 64.0 | 25.0 | 2.0 | 13.735 | O | 15 |
| 7064 | 8.0 | 65.0 | 25.0 | 2.0 | 13.317 | O | 15 |
| 7065 | 7.0 | 66.0 | 25.0 | 2.0 | 12.899 | O | 15 |
| 7066 | 6.0 | 67.0 | 25.0 | 2.0 | 12.481 | O | 15 |
| 7067 | 5.0 | 68.0 | 25.0 | 2.0 | 12.063 | O | 15 |
| 7068 | 4.0 | 69.0 | 25.0 | 2.0 | 11.645 | O | 15 |
| 7069 | 3.0 | 70.0 | 25.0 | 2.0 | 11.227 | O | 15 |
| 7070 | 2.0 | 71.0 | 25.0 | 2.0 | 10.809 | O | 15 |
| 7071 | 1.0 | 72.0 | 25.0 | 2.0 | 10.391 | O | 15 |
| 7072 | 0.0 | 73.0 | 25.0 | 2.0 | 9.973 | O | 15 |
| 7073 | 24.0 | 44.0 | 30.0 | 2.0 | 19.196 | X | 15 |
| 7074 | 23.5 | 44.5 | 30.0 | 2.0 | 19.018 | X | 15 |
| 7075 | 23.4 | 44.6 | 30.0 | 2.0 | 18.982 | O | 15 |
| 7076 | 23.0 | 45.0 | 30.0 | 2.0 | 18.839 | O | 15 |
| 7077 | 20.0 | 48.0 | 30.0 | 2.0 | 17.769 | O | 15 |
| 7078 | 10.0 | 58.0 | 30.0 | 2.0 | 14.163 | O | 15 |
| 7079 | 9.0 | 59.0 | 30.0 | 2.0 | 13.745 | O | 15 |
| 7080 | 8.0 | 60.0 | 30.0 | 2.0 | 13.327 | O | 15 |
| 7081 | 7.0 | 61.0 | 30.0 | 2.0 | 12.909 | O | 15 |
| 7082 | 6.0 | 62.0 | 30.0 | 2.0 | 12.491 | O | 15 |
| 7083 | 5.0 | 63.0 | 30.0 | 2.0 | 12.073 | O | 15 |
| 7084 | 4.0 | 64.0 | 30.0 | 2.0 | 11.656 | O | 15 |
| 7085 | 3.0 | 65.0 | 30.0 | 2.0 | 11.238 | O | 15 |
| 7086 | 2.0 | 66.0 | 30.0 | 2.0 | 10.820 | O | 15 |
| 7087 | 1.0 | 67.0 | 30.0 | 2.0 | 10.402 | O | 15 |
| 7088 | 0.0 | 68.0 | 30.0 | 2.0 | 9.984 | O | 15 |
| 7089 | 24.0 | 39.0 | 35.0 | 2.0 | 19.196 | X | 15 |
| 7090 | 23.5 | 39.5 | 35.0 | 2.0 | 19.018 | X | 15 |
| 7091 | 23.4 | 39.6 | 35.0 | 2.0 | 18.982 | O | 15 |
| 7092 | 23.0 | 40.0 | 35.0 | 2.0 | 18.839 | O | 15 |

[Table 123]

| 7093 | 20.0 | 43.0 | 35.0 | 2.0 | 17.769 | O | 15 |
|---|---|---|---|---|---|---|---|
| 7094 | 10.0 | 53.0 | 35.0 | 2.0 | 14.174 | O | 15 |
| 7095 | 9.0 | 54.0 | 35.0 | 2.0 | 13.756 | O | 15 |
| 7096 | 8.0 | 55.0 | 35.0 | 2.0 | 13.338 | O | 15 |
| 7097 | 7.0 | 56.0 | 35.0 | 2.0 | 12.920 | O | 15 |
| 7098 | 6.0 | 57.0 | 35.0 | 2.0 | 12.502 | O | 15 |
| 7099 | 5.0 | 58.0 | 35.0 | 2.0 | 12.084 | O | 15 |
| 7100 | 4.0 | 59.0 | 35.0 | 2.0 | 11.666 | O | 15 |
| 7101 | 3.0 | 60.0 | 35.0 | 2.0 | 11.248 | O | 15 |
| 7102 | 2.0 | 61.0 | 35.0 | 2.0 | 10.830 | O | 15 |
| 7103 | 1.0 | 62.0 | 35.0 | 2.0 | 10.412 | O | 15 |
| 7104 | 0.0 | 63.0 | 35.0 | 2.0 | 9.994 | O | 15 |
| 7105 | 24.0 | 34.0 | 40.0 | 2.0 | 19.196 | X | 15 |
| 7106 | 23.5 | 34.5 | 40.0 | 2.0 | 19.018 | X | 15 |
| 7107 | 23.4 | 34.6 | 40.0 | 2.0 | 18.982 | O | 15 |
| 7108 | 23.0 | 35.0 | 40.0 | 2.0 | 18.840 | O | 15 |
| 7109 | 20.0 | 38.0 | 40.0 | 2.0 | 17.769 | O | 15 |
| 7110 | 10.0 | 48.0 | 40.0 | 2.0 | 14.184 | O | 15 |
| 7111 | 9.0 | 49.0 | 40.0 | 2.0 | 13.766 | O | 15 |
| 7112 | 8.0 | 50.0 | 40.0 | 2.0 | 13.348 | O | 15 |
| 7113 | 7.0 | 51.0 | 40.0 | 2.0 | 12.930 | O | 15 |
| 7114 | 6.0 | 52.0 | 40.0 | 2.0 | 12.512 | O | 15 |
| 7115 | 5.0 | 53.0 | 40.0 | 2.0 | 12.094 | O | 15 |
| 7116 | 4.0 | 54.0 | 40.0 | 2.0 | 11.676 | O | 15 |
| 7117 | 3.0 | 55.0 | 40.0 | 2.0 | 11.259 | O | 15 |
| 7118 | 2.0 | 56.0 | 40.0 | 2.0 | 10.841 | O | 15 |
| 7119 | 1.0 | 57.0 | 40.0 | 2.0 | 10.423 | O | 15 |
| 7120 | 0.0 | 58.0 | 40.0 | 2.0 | 10.005 | O | 15 |
| 7121 | 24.0 | 29.0 | 45.0 | 2.0 | 19.197 | X | 15 |
| 7122 | 23.5 | 29.5 | 45.0 | 2.0 | 19.018 | X | 15 |
| 7123 | 23.4 | 29.6 | 45.0 | 2.0 | 18.983 | O | 15 |
| 7124 | 23.0 | 30.0 | 45.0 | 2.0 | 18.840 | O | 15 |
| 7125 | 20.0 | 33.0 | 45.0 | 2.0 | 17.770 | O | 15 |
| 7126 | 10.0 | 43.0 | 45.0 | 2.0 | 14.194 | O | 15 |
| 7127 | 9.0 | 44.0 | 45.0 | 2.0 | 13.777 | O | 15 |
| 7128 | 8.0 | 45.0 | 45.0 | 2.0 | 13.359 | O | 15 |
| 7129 | 7.0 | 46.0 | 45.0 | 2.0 | 12.941 | O | 15 |
| 7130 | 6.0 | 47.0 | 45.0 | 2.0 | 12.523 | O | 15 |
| 7131 | 5.0 | 48.0 | 45.0 | 2.0 | 12.105 | O | 15 |
| 7132 | 4.0 | 49.0 | 45.0 | 2.0 | 11.687 | O | 15 |
| 7133 | 3.0 | 50.0 | 45.0 | 2.0 | 11.269 | O | 15 |
| 7134 | 2.0 | 51.0 | 45.0 | 2.0 | 10.851 | O | 15 |
| 7135 | 1.0 | 52.0 | 45.0 | 2.0 | 10.433 | O | 15 |
| 7136 | 0.0 | 53.0 | 45.0 | 2.0 | 10.015 | O | 15 |
| 7137 | 24.0 | 24.0 | 50.0 | 2.0 | 19.197 | X | 15 |
| 7138 | 23.5 | 24.5 | 50.0 | 2.0 | 19.019 | X | 15 |
| 7139 | 23.4 | 24.6 | 50.0 | 2.0 | 18.983 | O | 15 |
| 7140 | 23.0 | 25.0 | 50.0 | 2.0 | 18.840 | O | 15 |
| 7141 | 20.0 | 28.0 | 50.0 | 2.0 | 17.770 | O | 15 |
| 7142 | 10.0 | 38.0 | 50.0 | 2.0 | 14.202 | O | 15 |

[Table 124]

| 7143 | 9.0 | 39.0 | 50.0 | 2.0 | 13.787 | O | 15 |
|------|-----|------|------|-----|--------|---|----|
| 7144 | 8.0 | 40.0 | 50.0 | 2.0 | 13.369 | O | 15 |
| 7145 | 7.0 | 41.0 | 50.0 | 2.0 | 12.951 | O | 15 |
| 7146 | 6.0 | 42.0 | 50.0 | 2.0 | 12.533 | O | 15 |
| 7147 | 5.0 | 43.0 | 50.0 | 2.0 | 12.115 | O | 15 |
| 7148 | 4.0 | 44.0 | 50.0 | 2.0 | 11.697 | O | 15 |
| 7149 | 3.0 | 45.0 | 50.0 | 2.0 | 11.279 | O | 15 |
| 7150 | 2.0 | 46.0 | 50.0 | 2.0 | 10.862 | O | 15 |
| 7151 | 1.0 | 47.0 | 50.0 | 2.0 | 10.444 | O | 15 |
| 7152 | 0.0 | 48.0 | 50.0 | 2.0 | 10.026 | O | 15 |
| 7153 | 24.0 | 19.0 | 55.0 | 2.0 | 19.197 | X | 15 |
| 7154 | 23.5 | 19.5 | 55.0 | 2.0 | 19.019 | X | 15 |
| 7155 | 23.4 | 19.6 | 55.0 | 2.0 | 18.983 | O | 15 |
| 7156 | 23.0 | 20.0 | 55.0 | 2.0 | 18.841 | O | 15 |
| 7157 | 20.0 | 23.0 | 55.0 | 2.0 | 17.770 | O | 15 |
| 7158 | 10.0 | 33.0 | 55.0 | 2.0 | 14.202 | O | 15 |
| 7159 | 9.0 | 34.0 | 55.0 | 2.0 | 13.797 | O | 15 |
| 7160 | 8.0 | 35.0 | 55.0 | 2.0 | 13.379 | O | 15 |
| 7161 | 7.0 | 36.0 | 55.0 | 2.0 | 12.962 | O | 15 |
| 7162 | 6.0 | 37.0 | 55.0 | 2.0 | 12.544 | O | 15 |
| 7163 | 5.0 | 38.0 | 55.0 | 2.0 | 12.126 | O | 15 |
| 7164 | 4.0 | 39.0 | 55.0 | 2.0 | 11.708 | O | 15 |
| 7165 | 3.0 | 40.0 | 55.0 | 2.0 | 11.290 | O | 15 |
| 7166 | 2.0 | 41.0 | 55.0 | 2.0 | 10.872 | O | 15 |
| 7167 | 1.0 | 42.0 | 55.0 | 2.0 | 10.454 | O | 15 |
| 7168 | 0.0 | 43.0 | 55.0 | 2.0 | 10.036 | O | 15 |
| 7169 | 24.0 | 14.0 | 60.0 | 2.0 | 19.198 | X | 15 |
| 7170 | 23.5 | 14.5 | 60.0 | 2.0 | 19.019 | X | 15 |
| 7171 | 23.4 | 14.6 | 60.0 | 2.0 | 18.984 | O | 15 |
| 7172 | 23.0 | 15.0 | 60.0 | 2.0 | 18.841 | O | 15 |
| 7173 | 20.0 | 18.0 | 60.0 | 2.0 | 17.770 | O | 15 |
| 7174 | 10.0 | 28.0 | 60.0 | 2.0 | 14.202 | O | 15 |
| 7175 | 9.0 | 29.0 | 60.0 | 2.0 | 13.808 | O | 15 |
| 7176 | 8.0 | 30.0 | 60.0 | 2.0 | 13.390 | O | 15 |
| 7177 | 7.0 | 31.0 | 60.0 | 2.0 | 12.972 | O | 15 |
| 7178 | 6.0 | 32.0 | 60.0 | 2.0 | 12.554 | O | 15 |
| 7179 | 5.0 | 33.0 | 60.0 | 2.0 | 12.136 | O | 15 |
| 7180 | 4.0 | 34.0 | 60.0 | 2.0 | 11.718 | O | 15 |
| 7181 | 3.0 | 35.0 | 60.0 | 2.0 | 11.300 | O | 15 |
| 7182 | 2.0 | 36.0 | 60.0 | 2.0 | 10.882 | O | 15 |
| 7183 | 1.0 | 37.0 | 60.0 | 2.0 | 10.465 | O | 15 |
| 7184 | 0.0 | 38.0 | 60.0 | 2.0 | 10.047 | O | 15 |
| 7185 | 24.0 | 9.0 | 65.0 | 2.0 | 19.198 | X | 15 |
| 7186 | 23.5 | 9.5 | 65.0 | 2.0 | 19.020 | X | 15 |
| 7187 | 23.4 | 9.6 | 65.0 | 2.0 | 18.984 | O | 15 |
| 7188 | 23.0 | 10.0 | 65.0 | 2.0 | 18.841 | O | 15 |
| 7189 | 20.0 | 13.0 | 65.0 | 2.0 | 17.771 | O | 15 |
| 7190 | 10.0 | 23.0 | 65.0 | 2.0 | 14.203 | O | 15 |
| 7191 | 9.0 | 24.0 | 65.0 | 2.0 | 13.818 | O | 15 |
| 7192 | 8.0 | 25.0 | 65.0 | 2.0 | 13.400 | O | 15 |

[Table 125]

| 7193 | 7.0 | 26.0 | 65.0 | 2.0 | 12.982 | O | 15 |
|---|---|---|---|---|---|---|---|
| 7194 | 6.0 | 27.0 | 65.0 | 2.0 | 12.565 | O | 15 |
| 7195 | 5.0 | 28.0 | 65.0 | 2.0 | 12.147 | O | 15 |
| 7196 | 4.0 | 29.0 | 65.0 | 2.0 | 11.729 | O | 15 |
| 7197 | 3.0 | 30.0 | 65.0 | 2.0 | 11.311 | O | 15 |
| 7198 | 2.0 | 31.0 | 65.0 | 2.0 | 10.893 | O | 15 |
| 7199 | 1.0 | 32.0 | 65.0 | 2.0 | 10.475 | O | 15 |
| 7200 | 0.0 | 33.0 | 65.0 | 2.0 | 10.057 | O | 15 |
| 7201 | 24.0 | 4.0 | 70.0 | 2.0 | 19.198 | X | 15 |
| 7202 | 23.5 | 4.5 | 70.0 | 2.0 | 19.020 | X | 15 |
| 7203 | 23.4 | 4.6 | 70.0 | 2.0 | 18.984 | O | 15 |
| 7204 | 23.0 | 5.0 | 70.0 | 2.0 | 18.841 | O | 15 |
| 7205 | 20.0 | 8.0 | 70.0 | 2.0 | 17.771 | O | 15 |
| 7206 | 10.0 | 18.0 | 70.0 | 2.0 | 14.203 | O | 15 |
| 7207 | 9.0 | 19.0 | 70.0 | 2.0 | 13.829 | O | 15 |
| 7208 | 8.0 | 20.0 | 70.0 | 2.0 | 13.411 | O | 15 |
| 7209 | 7.0 | 21.0 | 70.0 | 2.0 | 12.993 | O | 15 |
| 7210 | 6.0 | 22.0 | 70.0 | 2.0 | 12.575 | O | 15 |
| 7211 | 5.0 | 23.0 | 70.0 | 2.0 | 12.157 | O | 15 |
| 7212 | 4.0 | 24.0 | 70.0 | 2.0 | 11.739 | O | 15 |
| 7213 | 3.0 | 25.0 | 70.0 | 2.0 | 11.321 | O | 15 |
| 7214 | 2.0 | 26.0 | 70.0 | 2.0 | 10.903 | O | 15 |
| 7215 | 1.0 | 27.0 | 70.0 | 2.0 | 10.485 | O | 15 |
| 7216 | 0.0 | 28.0 | 70.0 | 2.0 | 10.068 | O | 15 |
| 7217 | 24.0 | 66.0 | 5.0 | 5.0 | 19.161 | X | 35 |
| 7218 | 23.6 | 66.4 | 5.0 | 5.0 | 19.019 | X | 35 |
| 7219 | 23.5 | 66.5 | 5.0 | 5.0 | 18.983 | O | 35 |
| 7220 | 23.0 | 67.0 | 5.0 | 5.0 | 18.804 | O | 35 |
| 7221 | 20.0 | 70.0 | 5.0 | 5.0 | 17.734 | O | 35 |
| 7222 | 10.0 | 80.0 | 5.0 | 5.0 | 14.099 | O | 35 |
| 7223 | 9.0 | 81.0 | 5.0 | 5.0 | 13.681 | O | 35 |
| 7224 | 8.0 | 82.0 | 5.0 | 5.0 | 13.264 | O | 35 |
| 7225 | 7.0 | 83.0 | 5.0 | 5.0 | 12.846 | O | 35 |
| 7226 | 6.0 | 84.0 | 5.0 | 5.0 | 12.428 | O | 35 |
| 7227 | 5.0 | 85.0 | 5.0 | 5.0 | 12.010 | O | 35 |
| 7228 | 4.0 | 86.0 | 5.0 | 5.0 | 11.592 | O | 35 |
| 7229 | 3.0 | 87.0 | 5.0 | 5.0 | 11.174 | O | 35 |
| 7230 | 2.0 | 88.0 | 5.0 | 5.0 | 10.756 | O | 35 |
| 7231 | 1.0 | 89.0 | 5.0 | 5.0 | 10.338 | O | 35 |
| 7232 | 0.0 | 90.0 | 5.0 | 5.0 | 9.920 | O | 35 |
| 7233 | 24.0 | 61.0 | 10.0 | 5.0 | 19.162 | X | 35 |
| 7234 | 23.6 | 61.4 | 10.0 | 5.0 | 19.019 | X | 35 |
| 7235 | 23.5 | 61.5 | 10.0 | 5.0 | 18.983 | O | 35 |
| 7236 | 23.0 | 62.0 | 10.0 | 5.0 | 18.805 | O | 35 |
| 7237 | 20.0 | 65.0 | 10.0 | 5.0 | 17.734 | O | 35 |
| 7238 | 10.0 | 75.0 | 10.0 | 5.0 | 14.110 | O | 35 |
| 7239 | 9.0 | 76.0 | 10.0 | 5.0 | 13.692 | O | 35 |
| 7240 | 8.0 | 77.0 | 10.0 | 5.0 | 13.274 | O | 35 |
| 7241 | 7.0 | 78.0 | 10.0 | 5.0 | 12.856 | O | 35 |
| 7242 | 6.0 | 79.0 | 10.0 | 5.0 | 12.438 | O | 35 |

[Table 126]

| 7243 | 5.0 | 80.0 | 10.0 | 5.0 | 12.020 | O | 35 |
|------|-----|------|------|-----|--------|---|-----|
| 7244 | 4.0 | 81.0 | 10.0 | 5.0 | 11.602 | O | 35 |
| 7245 | 3.0 | 82.0 | 10.0 | 5.0 | 11.184 | O | 35 |
| 7246 | 2.0 | 83.0 | 10.0 | 5.0 | 10.766 | O | 35 |
| 7247 | 1.0 | 84.0 | 10.0 | 5.0 | 10.349 | O | 35 |
| 7248 | 0.0 | 85.0 | 10.0 | 5.0 | 9.931 | O | 35 |
| 7249 | 24.0 | 56.0 | 15.0 | 5.0 | 19.162 | X | 35 |
| 7250 | 23.6 | 56.4 | 15.0 | 5.0 | 19.019 | X | 35 |
| 7251 | 23.5 | 56.5 | 15.0 | 5.0 | 18.983 | O | 35 |
| 7252 | 23.0 | 57.0 | 15.0 | 5.0 | 18.805 | O | 35 |
| 7253 | 20.0 | 60.0 | 15.0 | 5.0 | 17.735 | O | 35 |
| 7254 | 10.0 | 70.0 | 15.0 | 5.0 | 14.120 | O | 35 |
| 7255 | 9.0 | 71.0 | 15.0 | 5.0 | 13.702 | O | 35 |
| 7256 | 8.0 | 72.0 | 15.0 | 5.0 | 13.284 | O | 35 |
| 7257 | 7.0 | 73.0 | 15.0 | 5.0 | 12.867 | O | 35 |
| 7258 | 6.0 | 74.0 | 15.0 | 5.0 | 12.449 | O | 35 |
| 7259 | 5.0 | 75.0 | 15.0 | 5.0 | 12.031 | O | 35 |
| 7260 | 4.0 | 76.0 | 15.0 | 5.0 | 11.613 | O | 35 |
| 7261 | 3.0 | 77.0 | 15.0 | 5.0 | 11.195 | O | 35 |
| 7262 | 2.0 | 78.0 | 15.0 | 5.0 | 10.777 | O | 35 |
| 7263 | 1.0 | 79.0 | 15.0 | 5.0 | 10.359 | O | 35 |
| 7264 | 0.0 | 80.0 | 15.0 | 5.0 | 9.941 | O | 35 |
| 7265 | 24.0 | 51.0 | 20.0 | 5.0 | 19.162 | X | 35 |
| 7266 | 23.6 | 51.4 | 20.0 | 5.0 | 19.019 | X | 35 |
| 7267 | 23.5 | 51.5 | 20.0 | 5.0 | 18.984 | O | 35 |
| 7268 | 23.0 | 52.0 | 20.0 | 5.0 | 18.805 | O | 35 |
| 7269 | 20.0 | 55.0 | 20.0 | 5.0 | 17.735 | O | 35 |
| 7270 | 10.0 | 65.0 | 20.0 | 5.0 | 14.131 | O | 35 |
| 7271 | 9.0 | 66.0 | 20.0 | 5.0 | 13.713 | O | 35 |
| 7272 | 8.0 | 67.0 | 20.0 | 5.0 | 13.295 | O | 35 |
| 7273 | 7.0 | 68.0 | 20.0 | 5.0 | 12.877 | O | 35 |
| 7274 | 6.0 | 69.0 | 20.0 | 5.0 | 12.459 | O | 35 |
| 7275 | 5.0 | 70.0 | 20.0 | 5.0 | 12.041 | O | 35 |
| 7276 | 4.0 | 71.0 | 20.0 | 5.0 | 11.623 | O | 35 |
| 7277 | 3.0 | 72.0 | 20.0 | 5.0 | 11.205 | O | 35 |
| 7278 | 2.0 | 73.0 | 20.0 | 5.0 | 10.787 | O | 35 |
| 7279 | 1.0 | 74.0 | 20.0 | 5.0 | 10.369 | O | 35 |
| 7280 | 0.0 | 75.0 | 20.0 | 5.0 | 9.952 | O | 35 |
| 7281 | 24.0 | 46.0 | 25.0 | 5.0 | 19.162 | X | 35 |
| 7282 | 23.6 | 46.4 | 25.0 | 5.0 | 19.020 | X | 35 |
| 7283 | 23.5 | 46.5 | 25.0 | 5.0 | 18.984 | O | 35 |
| 7284 | 23.0 | 47.0 | 25.0 | 5.0 | 18.806 | O | 35 |
| 7285 | 20.0 | 50.0 | 25.0 | 5.0 | 17.735 | O | 35 |
| 7286 | 10.0 | 60.0 | 25.0 | 5.0 | 14.141 | O | 35 |
| 7287 | 9.0 | 61.0 | 25.0 | 5.0 | 13.723 | O | 35 |
| 7288 | 8.0 | 62.0 | 25.0 | 5.0 | 13.305 | O | 35 |
| 7289 | 7.0 | 63.0 | 25.0 | 5.0 | 12.887 | O | 35 |
| 7290 | 6.0 | 64.0 | 25.0 | 5.0 | 12.470 | O | 35 |
| 7291 | 5.0 | 65.0 | 25.0 | 5.0 | 12.052 | O | 35 |
| 7292 | 4.0 | 66.0 | 25.0 | 5.0 | 11.634 | O | 35 |

[Table 127]

| 7293 | 3.0 | 67.0 | 25.0 | 5.0 | 11.216 | O | 35 |
|---|---|---|---|---|---|---|---|
| 7294 | 2.0 | 68.0 | 25.0 | 5.0 | 10.798 | O | 35 |
| 7295 | 1.0 | 69.0 | 25.0 | 5.0 | 10.380 | O | 35 |
| 7296 | 0.0 | 70.0 | 25.0 | 5.0 | 9.962 | O | 35 |
| 7297 | 24.0 | 41.0 | 30.0 | 5.0 | 19.163 | X | 35 |
| 7298 | 23.6 | 41.4 | 30.0 | 5.0 | 19.020 | X | 35 |
| 7299 | 23.5 | 41.5 | 30.0 | 5.0 | 18.984 | O | 35 |
| 7300 | 23.0 | 42.0 | 30.0 | 5.0 | 18.806 | O | 35 |
| 7301 | 20.0 | 45.0 | 30.0 | 5.0 | 17.736 | O | 35 |
| 7302 | 10.0 | 55.0 | 30.0 | 5.0 | 14.152 | O | 35 |
| 7303 | 9.0 | 56.0 | 30.0 | 5.0 | 13.734 | O | 35 |
| 7304 | 8.0 | 57.0 | 30.0 | 5.0 | 13.316 | O | 35 |
| 7305 | 7.0 | 58.0 | 30.0 | 5.0 | 12.898 | O | 35 |
| 7306 | 6.0 | 59.0 | 30.0 | 5.0 | 12.480 | O | 35 |
| 7307 | 5.0 | 60.0 | 30.0 | 5.0 | 12.062 | O | 35 |
| 7308 | 4.0 | 61.0 | 30.0 | 5.0 | 11.644 | O | 35 |
| 7309 | 3.0 | 62.0 | 30.0 | 5.0 | 11.226 | O | 35 |
| 7310 | 2.0 | 63.0 | 30.0 | 5.0 | 10.808 | O | 35 |
| 7311 | 1.0 | 64.0 | 30.0 | 5.0 | 10.390 | O | 35 |
| 7312 | 0.0 | 65.0 | 30.0 | 5.0 | 9.972 | O | 35 |
| 7313 | 24.0 | 36.0 | 35.0 | 5.0 | 19.163 | X | 35 |
| 7314 | 23.6 | 36.4 | 35.0 | 5.0 | 19.020 | X | 35 |
| 7315 | 23.5 | 36.5 | 35.0 | 5.0 | 18.985 | O | 35 |
| 7316 | 23.0 | 37.0 | 35.0 | 5.0 | 18.806 | O | 35 |
| 7317 | 20.0 | 40.0 | 35.0 | 5.0 | 17.736 | O | 35 |
| 7318 | 10.0 | 50.0 | 35.0 | 5.0 | 14.162 | O | 35 |
| 7319 | 9.0 | 51.0 | 35.0 | 5.0 | 13.744 | O | 35 |
| 7320 | 8.0 | 52.0 | 35.0 | 5.0 | 13.326 | O | 35 |
| 7321 | 7.0 | 53.0 | 35.0 | 5.0 | 12.908 | O | 35 |
| 7322 | 6.0 | 54.0 | 35.0 | 5.0 | 12.490 | O | 35 |
| 7323 | 5.0 | 55.0 | 35.0 | 5.0 | 12.073 | O | 35 |
| 7324 | 4.0 | 56.0 | 35.0 | 5.0 | 11.655 | O | 35 |
| 7325 | 3.0 | 57.0 | 35.0 | 5.0 | 11.237 | O | 35 |
| 7326 | 2.0 | 58.0 | 35.0 | 5.0 | 10.819 | O | 35 |
| 7327 | 1.0 | 59.0 | 35.0 | 5.0 | 10.401 | O | 35 |
| 7328 | 0.0 | 60.0 | 35.0 | 5.0 | 9.983 | O | 35 |
| 7329 | 24.0 | 31.0 | 40.0 | 5.0 | 19.163 | X | 35 |
| 7330 | 23.6 | 31.4 | 40.0 | 5.0 | 19.021 | X | 35 |
| 7331 | 23.5 | 31.5 | 40.0 | 5.0 | 18.985 | O | 35 |
| 7332 | 23.0 | 32.0 | 40.0 | 5.0 | 18.807 | O | 35 |
| 7333 | 20.0 | 35.0 | 40.0 | 5.0 | 17.736 | O | 35 |
| 7334 | 10.0 | 45.0 | 40.0 | 5.0 | 14.168 | O | 35 |
| 7335 | 9.0 | 46.0 | 40.0 | 5.0 | 13.755 | O | 35 |
| 7336 | 8.0 | 47.0 | 40.0 | 5.0 | 13.337 | O | 35 |
| 7337 | 7.0 | 48.0 | 40.0 | 5.0 | 12.919 | O | 35 |
| 7338 | 6.0 | 49.0 | 40.0 | 5.0 | 12.501 | O | 35 |
| 7339 | 5.0 | 50.0 | 40.0 | 5.0 | 12.083 | O | 35 |
| 7340 | 4.0 | 51.0 | 40.0 | 5.0 | 11.665 | O | 35 |
| 7341 | 3.0 | 52.0 | 40.0 | 5.0 | 11.247 | O | 35 |
| 7342 | 2.0 | 53.0 | 40.0 | 5.0 | 10.829 | O | 35 |

[Table 128]

| 7343 | 1.0 | 54.0 | 40.0 | 5.0 | 10.411 | O | 35 |
|---|---|---|---|---|---|---|---|
| 7344 | 0.0 | 55.0 | 40.0 | 5.0 | 9.993 | O | 35 |
| 7345 | 24.0 | 26.0 | 45.0 | 5.0 | 19.164 | X | 35 |
| 7346 | 23.6 | 26.4 | 45.0 | 5.0 | 19.021 | X | 35 |
| 7347 | 23.5 | 26.5 | 45.0 | 5.0 | 18.985 | O | 35 |
| 7348 | 23.0 | 27.0 | 45.0 | 5.0 | 18.807 | O | 35 |
| 7349 | 20.0 | 30.0 | 45.0 | 5.0 | 17.736 | O | 35 |
| 7350 | 10.0 | 40.0 | 45.0 | 5.0 | 14.168 | O | 35 |
| 7351 | 9.0 | 41.0 | 45.0 | 5.0 | 13.765 | O | 35 |
| 7352 | 8.0 | 42.0 | 45.0 | 5.0 | 13.347 | O | 35 |
| 7353 | 7.0 | 43.0 | 45.0 | 5.0 | 12.929 | O | 35 |
| 7354 | 6.0 | 44.0 | 45.0 | 5.0 | 12.511 | O | 35 |
| 7355 | 5.0 | 45.0 | 45.0 | 5.0 | 12.093 | O | 35 |
| 7356 | 4.0 | 46.0 | 45.0 | 5.0 | 11.675 | O | 35 |
| 7357 | 3.0 | 47.0 | 45.0 | 5.0 | 11.258 | O | 35 |
| 7358 | 2.0 | 48.0 | 45.0 | 5.0 | 10.840 | O | 35 |
| 7359 | 1.0 | 49.0 | 45.0 | 5.0 | 10.422 | O | 35 |
| 7360 | 0.0 | 50.0 | 45.0 | 5.0 | 10.004 | O | 35 |
| 7361 | 24.0 | 21.0 | 50.0 | 5.0 | 19.164 | X | 35 |
| 7362 | 23.6 | 21.4 | 50.0 | 5.0 | 19.021 | X | 35 |
| 7363 | 23.5 | 21.5 | 50.0 | 5.0 | 18.986 | O | 35 |
| 7364 | 23.0 | 22.0 | 50.0 | 5.0 | 18.807 | O | 35 |
| 7365 | 20.0 | 25.0 | 50.0 | 5.0 | 17.737 | O | 35 |
| 7366 | 10.0 | 35.0 | 50.0 | 5.0 | 14.169 | O | 35 |
| 7367 | 9.0 | 36.0 | 50.0 | 5.0 | 13.776 | O | 35 |
| 7368 | 8.0 | 37.0 | 50.0 | 5.0 | 13.358 | O | 35 |
| 7369 | 7.0 | 38.0 | 50.0 | 5.0 | 12.940 | O | 35 |
| 7370 | 6.0 | 39.0 | 50.0 | 5.0 | 12.522 | O | 35 |
| 7371 | 5.0 | 40.0 | 50.0 | 5.0 | 12.104 | O | 35 |
| 7372 | 4.0 | 41.0 | 50.0 | 5.0 | 11.686 | O | 35 |
| 7373 | 3.0 | 42.0 | 50.0 | 5.0 | 11.268 | O | 35 |
| 7374 | 2.0 | 43.0 | 50.0 | 5.0 | 10.850 | O | 35 |
| 7375 | 1.0 | 44.0 | 50.0 | 5.0 | 10.432 | O | 35 |
| 7376 | 0.0 | 45.0 | 50.0 | 5.0 | 10.014 | O | 35 |
| 7377 | 24.0 | 16.0 | 55.0 | 5.0 | 19.164 | X | 35 |
| 7378 | 23.6 | 16.4 | 55.0 | 5.0 | 19.021 | X | 35 |
| 7379 | 23.5 | 16.5 | 55.0 | 5.0 | 18.986 | O | 35 |
| 7380 | 23.0 | 17.0 | 55.0 | 5.0 | 18.807 | O | 35 |
| 7381 | 20.0 | 20.0 | 55.0 | 5.0 | 17.737 | O | 35 |
| 7382 | 10.0 | 30.0 | 55.0 | 5.0 | 14.169 | O | 35 |
| 7383 | 9.0 | 31.0 | 55.0 | 5.0 | 13.786 | O | 35 |
| 7384 | 8.0 | 32.0 | 55.0 | 5.0 | 13.368 | O | 35 |
| 7385 | 7.0 | 33.0 | 55.0 | 5.0 | 12.950 | O | 35 |
| 7386 | 6.0 | 34.0 | 55.0 | 5.0 | 12.532 | O | 35 |
| 7387 | 5.0 | 35.0 | 55.0 | 5.0 | 12.114 | O | 35 |
| 7388 | 4.0 | 36.0 | 55.0 | 5.0 | 11.696 | O | 35 |
| 7389 | 3.0 | 37.0 | 55.0 | 5.0 | 11.278 | O | 35 |
| 7390 | 2.0 | 38.0 | 55.0 | 5.0 | 10.861 | O | 35 |
| 7391 | 1.0 | 39.0 | 55.0 | 5.0 | 10.443 | O | 35 |
| 7392 | 0.0 | 40.0 | 55.0 | 5.0 | 10.025 | O | 35 |

[Table 129]

| 7393 | 24.0 | 11.0 | 60.0 | 5.0 | 19.165 | X | 35 |
|------|------|------|------|-----|--------|---|----|
| 7394 | 23.6 | 11.4 | 60.0 | 5.0 | 19.022 | X | 35 |
| 7395 | 23.5 | 11.5 | 60.0 | 5.0 | 18.986 | O | 35 |
| 7396 | 23.0 | 12.0 | 60.0 | 5.0 | 18.808 | O | 35 |
| 7397 | 20.0 | 15.0 | 60.0 | 5.0 | 17.737 | O | 35 |
| 7398 | 10.0 | 25.0 | 60.0 | 5.0 | 14.169 | O | 35 |
| 7399 | 9.0 | 26.0 | 60.0 | 5.0 | 13.796 | O | 35 |
| 7400 | 8.0 | 27.0 | 60.0 | 5.0 | 13.379 | O | 35 |
| 7401 | 7.0 | 28.0 | 60.0 | 5.0 | 12.961 | O | 35 |
| 7402 | 6.0 | 29.0 | 60.0 | 5.0 | 12.543 | O | 35 |
| 7403 | 5.0 | 30.0 | 60.0 | 5.0 | 12.125 | O | 35 |
| 7404 | 4.0 | 31.0 | 60.0 | 5.0 | 11.707 | O | 35 |
| 7405 | 3.0 | 32.0 | 60.0 | 5.0 | 11.289 | O | 35 |
| 7406 | 2.0 | 33.0 | 60.0 | 5.0 | 10.871 | O | 35 |
| 7407 | 1.0 | 34.0 | 60.0 | 5.0 | 10.453 | O | 35 |
| 7408 | 0.0 | 35.0 | 60.0 | 5.0 | 10.035 | O | 35 |
| 7409 | 24.0 | 6.0 | 65.0 | 5.0 | 19.165 | X | 35 |
| 7410 | 23.6 | 6.4 | 65.0 | 5.0 | 19.022 | X | 35 |
| 7411 | 23.5 | 6.5 | 65.0 | 5.0 | 18.986 | O | 35 |
| 7412 | 23.0 | 7.0 | 65.0 | 5.0 | 18.808 | O | 35 |
| 7413 | 20.0 | 10.0 | 65.0 | 5.0 | 17.738 | O | 35 |
| 7414 | 10.0 | 20.0 | 65.0 | 5.0 | 14.169 | O | 35 |
| 7415 | 9.0 | 21.0 | 65.0 | 5.0 | 13.807 | O | 35 |
| 7416 | 8.0 | 22.0 | 65.0 | 5.0 | 13.389 | O | 35 |
| 7417 | 7.0 | 23.0 | 65.0 | 5.0 | 12.971 | O | 35 |
| 7418 | 6.0 | 24.0 | 65.0 | 5.0 | 12.553 | O | 35 |
| 7419 | 5.0 | 25.0 | 65.0 | 5.0 | 12.135 | O | 35 |
| 7420 | 4.0 | 26.0 | 65.0 | 5.0 | 11.717 | O | 35 |
| 7421 | 3.0 | 27.0 | 65.0 | 5.0 | 11.299 | O | 35 |
| 7422 | 2.0 | 28.0 | 65.0 | 5.0 | 10.881 | O | 35 |
| 7423 | 1.0 | 29.0 | 65.0 | 5.0 | 10.464 | O | 35 |
| 7424 | 0.0 | 30.0 | 65.0 | 5.0 | 10.046 | O | 35 |
| 7425 | 24.0 | 1.0 | 70.0 | 5.0 | 19.165 | X | 35 |
| 7426 | 23.6 | 1.4 | 70.0 | 5.0 | 19.022 | X | 35 |
| 7427 | 23.5 | 1.5 | 70.0 | 5.0 | 18.987 | O | 35 |
| 7428 | 23.0 | 2.0 | 70.0 | 5.0 | 18.808 | O | 35 |
| 7429 | 20.0 | 5.0 | 70.0 | 5.0 | 17.738 | O | 35 |
| 7430 | 10.0 | 15.0 | 70.0 | 5.0 | 14.170 | O | 35 |
| 7431 | 9.0 | 16.0 | 70.0 | 5.0 | 13.813 | O | 35 |
| 7432 | 8.0 | 17.0 | 70.0 | 5.0 | 13.399 | O | 35 |
| 7433 | 7.0 | 18.0 | 70.0 | 5.0 | 12.982 | O | 35 |
| 7434 | 6.0 | 19.0 | 70.0 | 5.0 | 12.564 | O | 35 |
| 7435 | 5.0 | 20.0 | 70.0 | 5.0 | 12.146 | O | 35 |
| 7436 | 4.0 | 21.0 | 70.0 | 5.0 | 11.728 | O | 35 |
| 7437 | 3.0 | 22.0 | 70.0 | 5.0 | 11.310 | O | 35 |
| 7438 | 2.0 | 23.0 | 70.0 | 5.0 | 10.892 | O | 35 |
| 7439 | 1.0 | 24.0 | 70.0 | 5.0 | 10.474 | O | 35 |
| 7440 | 0.0 | 25.0 | 70.0 | 5.0 | 10.056 | O | 35 |
| 7441 | 24.0 | 61.0 | 5.0 | 10.0 | 19.106 | X | 69 |
| 7442 | 23.8 | 61.2 | 5.0 | 10.0 | 19.035 | X | 69 |

[Table 130]

| | | | | | | | |
|------|------|------|------|------|--------|---|----|
| 7443 | 23.7 | 61.3 | 5.0 | 10.0 | 18.999 | O | 69 |
| 7444 | 23.0 | 62.0 | 5.0 | 10.0 | 18.749 | O | 69 |
| 7445 | 20.0 | 65.0 | 5.0 | 10.0 | 17.679 | O | 69 |
| 7446 | 10.0 | 75.0 | 5.0 | 10.0 | 14.080 | O | 69 |
| 7447 | 9.0 | 76.0 | 5.0 | 10.0 | 13.662 | O | 69 |
| 7448 | 8.0 | 77.0 | 5.0 | 10.0 | 13.244 | O | 69 |
| 7449 | 7.0 | 78.0 | 5.0 | 10.0 | 12.827 | O | 69 |
| 7450 | 6.0 | 79.0 | 5.0 | 10.0 | 12.409 | O | 69 |
| 7451 | 5.0 | 80.0 | 5.0 | 10.0 | 11.991 | O | 69 |
| 7452 | 4.0 | 81.0 | 5.0 | 10.0 | 11.573 | O | 69 |
| 7453 | 3.0 | 82.0 | 5.0 | 10.0 | 11.155 | O | 69 |
| 7454 | 2.0 | 83.0 | 5.0 | 10.0 | 10.737 | O | 69 |
| 7455 | 1.0 | 84.0 | 5.0 | 10.0 | 10.319 | O | 69 |
| 7456 | 0.0 | 85.0 | 5.0 | 10.0 | 9.901 | O | 69 |
| 7457 | 24.0 | 56.0 | 10.0 | 10.0 | 19.106 | X | 69 |
| 7458 | 23.8 | 56.2 | 10.0 | 10.0 | 19.035 | X | 69 |
| 7459 | 23.7 | 56.3 | 10.0 | 10.0 | 18.999 | O | 69 |
| 7460 | 23.0 | 57.0 | 10.0 | 10.0 | 18.750 | O | 69 |
| 7461 | 20.0 | 60.0 | 10.0 | 10.0 | 17.679 | O | 69 |
| 7462 | 10.0 | 70.0 | 10.0 | 10.0 | 14.091 | O | 69 |
| 7463 | 9.0 | 71.0 | 10.0 | 10.0 | 13.673 | O | 69 |
| 7464 | 8.0 | 72.0 | 10.0 | 10.0 | 13.255 | O | 69 |
| 7465 | 7.0 | 73.0 | 10.0 | 10.0 | 12.837 | O | 69 |
| 7466 | 6.0 | 74.0 | 10.0 | 10.0 | 12.419 | O | 69 |
| 7467 | 5.0 | 75.0 | 10.0 | 10.0 | 12.001 | O | 69 |
| 7468 | 4.0 | 76.0 | 10.0 | 10.0 | 11.583 | O | 69 |
| 7469 | 3.0 | 77.0 | 10.0 | 10.0 | 11.165 | O | 69 |
| 7470 | 2.0 | 78.0 | 10.0 | 10.0 | 10.747 | O | 69 |
| 7471 | 1.0 | 79.0 | 10.0 | 10.0 | 10.330 | O | 69 |
| 7472 | 0.0 | 80.0 | 10.0 | 10.0 | 9.912 | O | 69 |
| 7473 | 24.0 | 51.0 | 15.0 | 10.0 | 19.107 | X | 69 |
| 7474 | 23.7 | 51.3 | 15.0 | 10.0 | 19.000 | **X** | 69 |
| 7475 | 23.6 | 51.4 | 15.0 | 10.0 | 18.964 | O | 69 |
| 7476 | 23.0 | 52.0 | 15.0 | 10.0 | 18.750 | O | 69 |
| 7477 | 20.0 | 55.0 | 15.0 | 10.0 | 17.679 | O | 69 |
| 7478 | 10.0 | 65.0 | 15.0 | 10.0 | 14.101 | O | 69 |
| 7479 | 9.0 | 66.0 | 15.0 | 10.0 | 13.683 | O | 69 |
| 7480 | 8.0 | 67.0 | 15.0 | 10.0 | 13.265 | O | 69 |
| 7481 | 7.0 | 68.0 | 15.0 | 10.0 | 12.847 | O | 69 |
| 7482 | 6.0 | 69.0 | 15.0 | 10.0 | 12.430 | O | 69 |
| 7483 | 5.0 | 70.0 | 15.0 | 10.0 | 12.012 | O | 69 |
| 7484 | 4.0 | 71.0 | 15.0 | 10.0 | 11.594 | O | 69 |
| 7485 | 3.0 | 72.0 | 15.0 | 10.0 | 11.176 | O | 69 |
| 7486 | 2.0 | 73.0 | 15.0 | 10.0 | 10.758 | O | 69 |
| 7487 | 1.0 | 74.0 | 15.0 | 10.0 | 10.340 | O | 69 |
| 7488 | 0.0 | 75.0 | 15.0 | 10.0 | 9.922 | O | 69 |
| 7489 | 24.0 | 46.0 | 20.0 | 10.0 | 19.107 | X | 69 |
| 7490 | 23.7 | 46.3 | 20.0 | 10.0 | 19.000 | **X** | 69 |
| 7491 | 23.6 | 46.4 | 20.0 | 10.0 | 18.964 | O | 69 |
| 7492 | 23.0 | 47.0 | 20.0 | 10.0 | 18.750 | O | 69 |

[Table 131]

| 7493 | 20.0 | 50.0 | 20.0 | 10.0 | 17.680 | O | 69 |
|---|---|---|---|---|---|---|---|
| 7494 | 10.0 | 60.0 | 20.0 | 10.0 | 14.112 | O | 69 |
| 7495 | 9.0 | 61.0 | 20.0 | 10.0 | 13.694 | O | 69 |
| 7496 | 8.0 | 62.0 | 20.0 | 10.0 | 13.276 | O | 69 |
| 7497 | 7.0 | 63.0 | 20.0 | 10.0 | 12.858 | O | 69 |
| 7498 | 6.0 | 64.0 | 20.0 | 10.0 | 12.440 | O | 69 |
| 7499 | 5.0 | 65.0 | 20.0 | 10.0 | 12.022 | O | 69 |
| 7500 | 4.0 | 66.0 | 20.0 | 10.0 | 11.604 | O | 69 |
| 7501 | 3.0 | 67.0 | 20.0 | 10.0 | 11.186 | O | 69 |
| 7502 | 2.0 | 68.0 | 20.0 | 10.0 | 10.768 | O | 69 |
| 7503 | 1.0 | 69.0 | 20.0 | 10.0 | 10.350 | O | 69 |
| 7504 | 0.0 | 70.0 | 20.0 | 10.0 | 9.933 | O | 69 |
| 7505 | 24.0 | 41.0 | 25.0 | 10.0 | 19.107 | X | 69 |
| 7506 | 23.7 | 41.3 | 25.0 | 10.0 | 19.000 | X | 69 |
| 7507 | 23.6 | 41.4 | 25.0 | 10.0 | 18.964 | O | 69 |
| 7508 | 23.0 | 42.0 | 25.0 | 10.0 | 18.750 | O | 69 |
| 7509 | 20.0 | 45.0 | 25.0 | 10.0 | 17.680 | O | 69 |
| 7510 | 10.0 | 55.0 | 25.0 | 10.0 | 14.112 | O | 69 |
| 7511 | 9.0 | 56.0 | 25.0 | 10.0 | 13.704 | O | 69 |
| 7512 | 8.0 | 57.0 | 25.0 | 10.0 | 13.286 | O | 69 |
| 7513 | 7.0 | 58.0 | 25.0 | 10.0 | 12.868 | O | 69 |
| 7514 | 6.0 | 59.0 | 25.0 | 10.0 | 12.450 | O | 69 |
| 7515 | 5.0 | 60.0 | 25.0 | 10.0 | 12.033 | O | 69 |
| 7516 | 4.0 | 61.0 | 25.0 | 10.0 | 11.615 | O | 69 |
| 7517 | 3.0 | 62.0 | 25.0 | 10.0 | 11.197 | O | 69 |
| 7518 | 2.0 | 63.0 | 25.0 | 10.0 | 10.779 | O | 69 |
| 7519 | 1.0 | 64.0 | 25.0 | 10.0 | 10.361 | O | 69 |
| 7520 | 0.0 | 65.0 | 25.0 | 10.0 | 9.943 | O | 69 |
| 7521 | 24.0 | 36.0 | 30.0 | 10.0 | 19.108 | X | 69 |
| 7522 | 23.7 | 36.3 | 30.0 | 10.0 | 19.000 | X | 69 |
| 7523 | 23.6 | 36.4 | 30.0 | 10.0 | 18.965 | O | 69 |
| 7524 | 23.0 | 37.0 | 30.0 | 10.0 | 18.751 | O | 69 |
| 7525 | 20.0 | 40.0 | 30.0 | 10.0 | 17.680 | O | 69 |
| 7526 | 10.0 | 50.0 | 30.0 | 10.0 | 14.112 | O | 69 |
| 7527 | 9.0 | 51.0 | 30.0 | 10.0 | 13.715 | O | 69 |
| 7528 | 8.0 | 52.0 | 30.0 | 10.0 | 13.297 | O | 69 |
| 7529 | 7.0 | 53.0 | 30.0 | 10.0 | 12.879 | O | 69 |
| 7530 | 6.0 | 54.0 | 30.0 | 10.0 | 12.461 | O | 69 |
| 7531 | 5.0 | 55.0 | 30.0 | 10.0 | 12.043 | O | 69 |
| 7532 | 4.0 | 56.0 | 30.0 | 10.0 | 11.625 | O | 69 |
| 7533 | 3.0 | 57.0 | 30.0 | 10.0 | 11.207 | O | 69 |
| 7534 | 2.0 | 58.0 | 30.0 | 10.0 | 10.789 | O | 69 |
| 7535 | 1.0 | 59.0 | 30.0 | 10.0 | 10.371 | O | 69 |
| 7536 | 0.0 | 60.0 | 30.0 | 10.0 | 9.953 | O | 69 |
| 7537 | 24.0 | 31.0 | 35.0 | 10.0 | 19.108 | X | 69 |
| 7538 | 23.7 | 31.3 | 35.0 | 10.0 | 19.001 | X | 69 |
| 7539 | 23.6 | 31.4 | 35.0 | 10.0 | 18.965 | O | 69 |
| 7540 | 23.0 | 32.0 | 35.0 | 10.0 | 18.751 | O | 69 |
| 7541 | 20.0 | 35.0 | 35.0 | 10.0 | 17.681 | O | 69 |
| 7542 | 10.0 | 45.0 | 35.0 | 10.0 | 14.112 | O | 69 |

[Table 132]

| 7543 | 9.0 | 46.0 | 35.0 | 10.0 | 13.725 | O | 69 |
|------|-----|------|------|------|--------|---|----|
| 7544 | 8.0 | 47.0 | 35.0 | 10.0 | 13.307 | O | 69 |
| 7545 | 7.0 | 48.0 | 35.0 | 10.0 | 12.889 | O | 69 |
| 7546 | 6.0 | 49.0 | 35.0 | 10.0 | 12.471 | O | 69 |
| 7547 | 5.0 | 50.0 | 35.0 | 10.0 | 12.053 | O | 69 |
| 7548 | 4.0 | 51.0 | 35.0 | 10.0 | 11.636 | O | 69 |
| 7549 | 3.0 | 52.0 | 35.0 | 10.0 | 11.218 | O | 69 |
| 7550 | 2.0 | 53.0 | 35.0 | 10.0 | 10.800 | O | 69 |
| 7551 | 1.0 | 54.0 | 35.0 | 10.0 | 10.382 | O | 69 |
| 7552 | 0.0 | 55.0 | 35.0 | 10.0 | 9.964 | O | 69 |
| 7553 | 24.0 | 26.0 | 40.0 | 10.0 | 19.108 | X | 69 |
| 7554 | 23.7 | 26.3 | 40.0 | 10.0 | 19.001 | X | 69 |
| 7555 | 23.6 | 26.4 | 40.0 | 10.0 | 18.965 | O | 69 |
| 7556 | 23.0 | 27.0 | 40.0 | 10.0 | 18.751 | O | 69 |
| 7557 | 20.0 | 30.0 | 40.0 | 10.0 | 17.681 | O | 69 |
| 7558 | 10.0 | 40.0 | 40.0 | 10.0 | 14.113 | O | 69 |
| 7559 | 9.0 | 41.0 | 40.0 | 10.0 | 13.736 | O | 69 |
| 7560 | 8.0 | 42.0 | 40.0 | 10.0 | 13.318 | O | 69 |
| 7561 | 7.0 | 43.0 | 40.0 | 10.0 | 12.900 | O | 69 |
| 7562 | 6.0 | 44.0 | 40.0 | 10.0 | 12.482 | O | 69 |
| 7563 | 5.0 | 45.0 | 40.0 | 10.0 | 12.064 | O | 69 |
| 7564 | 4.0 | 46.0 | 40.0 | 10.0 | 11.646 | O | 69 |
| 7565 | 3.0 | 47.0 | 40.0 | 10.0 | 11.228 | O | 69 |
| 7566 | 2.0 | 48.0 | 40.0 | 10.0 | 10.810 | O | 69 |
| 7567 | 1.0 | 49.0 | 40.0 | 10.0 | 10.392 | O | 69 |
| 7568 | 0.0 | 50.0 | 40.0 | 10.0 | 9.974 | O | 69 |
| 7569 | 24.0 | 21.0 | 45.0 | 10.0 | 19.108 | X | 69 |
| 7570 | 23.7 | 21.3 | 45.0 | 10.0 | 19.001 | X | 69 |
| 7571 | 23.6 | 21.4 | 45.0 | 10.0 | 18.966 | O | 69 |
| 7572 | 23.0 | 22.0 | 45.0 | 10.0 | 18.752 | O | 69 |
| 7573 | 20.0 | 25.0 | 45.0 | 10.0 | 17.681 | O | 69 |
| 7574 | 10.0 | 35.0 | 45.0 | 10.0 | 14.113 | O | 69 |
| 7575 | 9.0 | 36.0 | 45.0 | 10.0 | 13.746 | O | 69 |
| 7576 | 8.0 | 37.0 | 45.0 | 10.0 | 13.328 | O | 69 |
| 7577 | 7.0 | 38.0 | 45.0 | 10.0 | 12.910 | O | 69 |
| 7578 | 6.0 | 39.0 | 45.0 | 10.0 | 12.492 | O | 69 |
| 7579 | 5.0 | 40.0 | 45.0 | 10.0 | 12.074 | O | 69 |
| 7580 | 4.0 | 41.0 | 45.0 | 10.0 | 11.656 | O | 69 |
| 7581 | 3.0 | 42.0 | 45.0 | 10.0 | 11.239 | O | 69 |
| 7582 | 2.0 | 43.0 | 45.0 | 10.0 | 10.821 | O | 69 |
| 7583 | 1.0 | 44.0 | 45.0 | 10.0 | 10.403 | O | 69 |
| 7584 | 0.0 | 45.0 | 45.0 | 10.0 | 9.985 | O | 69 |
| 7585 | 24.0 | 16.0 | 50.0 | 10.0 | 19.109 | X | 69 |
| 7586 | 23.7 | 16.3 | 50.0 | 10.0 | 19.002 | X | 69 |
| 7587 | 23.6 | 16.4 | 50.0 | 10.0 | 18.966 | O | 69 |
| 7588 | 23.0 | 17.0 | 50.0 | 10.0 | 18.752 | O | 69 |
| 7589 | 20.0 | 20.0 | 50.0 | 10.0 | 17.681 | O | 69 |
| 7590 | 10.0 | 30.0 | 50.0 | 10.0 | 14.113 | O | 69 |
| 7591 | 9.0 | 31.0 | 50.0 | 10.0 | 13.756 | O | 69 |
| 7592 | 8.0 | 32.0 | 50.0 | 10.0 | 13.339 | O | 69 |

[Table 133]

| 7593 | 7.0 | 33.0 | 50.0 | 10.0 | 12.921 | O | 69 |
|---|---|---|---|---|---|---|---|
| 7594 | 6.0 | 34.0 | 50.0 | 10.0 | 12.503 | O | 69 |
| 7595 | 5.0 | 35.0 | 50.0 | 10.0 | 12.085 | O | 69 |
| 7596 | 4.0 | 36.0 | 50.0 | 10.0 | 11.667 | O | 69 |
| 7597 | 3.0 | 37.0 | 50.0 | 10.0 | 11.249 | O | 69 |
| 7598 | 2.0 | 38.0 | 50.0 | 10.0 | 10.831 | O | 69 |
| 7599 | 1.0 | 39.0 | 50.0 | 10.0 | 10.413 | O | 69 |
| 7600 | 0.0 | 40.0 | 50.0 | 10.0 | 9.995 | O | 69 |
| 7601 | 24.0 | 11.0 | 55.0 | 10.0 | 19.109 | X | 69 |
| 7602 | 23.7 | 11.3 | 55.0 | 10.0 | 19.002 | X | 69 |
| 7603 | 23.6 | 11.4 | 55.0 | 10.0 | 18.966 | O | 69 |
| 7604 | 23.0 | 12.0 | 55.0 | 10.0 | 18.752 | O | 69 |
| 7605 | 20.0 | 15.0 | 55.0 | 10.0 | 17.682 | O | 69 |
| 7606 | 10.0 | 25.0 | 55.0 | 10.0 | 14.114 | O | 69 |
| 7607 | 9.0 | 26.0 | 55.0 | 10.0 | 13.757 | O | 69 |
| 7608 | 8.0 | 27.0 | 55.0 | 10.0 | 13.349 | O | 69 |
| 7609 | 7.0 | 28.0 | 55.0 | 10.0 | 12.931 | O | 69 |
| 7610 | 6.0 | 29.0 | 55.0 | 10.0 | 12.513 | O | 69 |
| 7611 | 5.0 | 30.0 | 55.0 | 10.0 | 12.095 | O | 69 |
| 7612 | 4.0 | 31.0 | 55.0 | 10.0 | 11.677 | O | 69 |
| 7613 | 3.0 | 32.0 | 55.0 | 10.0 | 11.259 | O | 69 |
| 7614 | 2.0 | 33.0 | 55.0 | 10.0 | 10.842 | O | 69 |
| 7615 | 1.0 | 34.0 | 55.0 | 10.0 | 10.424 | O | 69 |
| 7616 | 0.0 | 35.0 | 55.0 | 10.0 | 10.006 | O | 69 |
| 7617 | 24.0 | 6.0 | 60.0 | 10.0 | 19.109 | X | 69 |
| 7618 | 23.7 | 6.3 | 60.0 | 10.0 | 19.002 | X | 69 |
| 7619 | 23.6 | 6.4 | 60.0 | 10.0 | 18.967 | O | 69 |
| 7620 | 23.0 | 7.0 | 60.0 | 10.0 | 18.752 | O | 69 |
| 7621 | 20.0 | 10.0 | 60.0 | 10.0 | 17.682 | O | 69 |
| 7622 | 10.0 | 20.0 | 60.0 | 10.0 | 14.114 | O | 69 |
| 7623 | 9.0 | 21.0 | 60.0 | 10.0 | 13.757 | O | 69 |
| 7624 | 8.0 | 22.0 | 60.0 | 10.0 | 13.359 | O | 69 |
| 7625 | 7.0 | 23.0 | 60.0 | 10.0 | 12.942 | O | 69 |
| 7626 | 6.0 | 24.0 | 60.0 | 10.0 | 12.524 | O | 69 |
| 7627 | 5.0 | 25.0 | 60.0 | 10.0 | 12.106 | O | 69 |
| 7628 | 4.0 | 26.0 | 60.0 | 10.0 | 11.688 | O | 69 |
| 7629 | 3.0 | 27.0 | 60.0 | 10.0 | 11.270 | O | 69 |
| 7630 | 2.0 | 28.0 | 60.0 | 10.0 | 10.852 | O | 69 |
| 7631 | 1.0 | 29.0 | 60.0 | 10.0 | 10.434 | O | 69 |
| 7632 | 0.0 | 30.0 | 60.0 | 10.0 | 10.016 | O | 69 |
| 7633 | 24.0 | 1.0 | 65.0 | 10.0 | 19.110 | X | 69 |
| 7634 | 23.7 | 1.3 | 65.0 | 10.0 | 19.002 | X | 69 |
| 7635 | 23.6 | 1.4 | 65.0 | 10.0 | 18.967 | O | 69 |
| 7636 | 23.0 | 2.0 | 65.0 | 10.0 | 18.753 | O | 69 |
| 7637 | 20.0 | 5.0 | 65.0 | 10.0 | 17.682 | O | 69 |
| 7638 | 10.0 | 15.0 | 65.0 | 10.0 | 14.114 | O | 69 |
| 7639 | 9.0 | 16.0 | 65.0 | 10.0 | 13.757 | O | 69 |
| 7640 | 8.0 | 17.0 | 65.0 | 10.0 | 13.370 | O | 69 |
| 7641 | 7.0 | 18.0 | 65.0 | 10.0 | 12.952 | O | 69 |
| 7642 | 6.0 | 19.0 | 65.0 | 10.0 | 12.534 | O | 69 |

[Table 134]

| 7643 | 5.0 | 20.0 | 65.0 | 10.0 | 12.116 | O | 69 |
|------|------|------|------|------|--------|---|-----|
| 7644 | 4.0 | 21.0 | 65.0 | 10.0 | 11.698 | O | 69 |
| 7645 | 3.0 | 22.0 | 65.0 | 10.0 | 11.280 | O | 69 |
| 7646 | 2.0 | 23.0 | 65.0 | 10.0 | 10.862 | O | 69 |
| 7647 | 1.0 | 24.0 | 65.0 | 10.0 | 10.444 | O | 69 |
| 7648 | 0.0 | 25.0 | 65.0 | 10.0 | 10.027 | O | 69 |
| 7649 | 24.0 | 56.0 | 5.0 | 15.0 | 19.051 | X | 102 |
| 7650 | 23.9 | 56.1 | 5.0 | 15.0 | 19.015 | X | 102 |
| 7651 | 23.8 | 56.2 | 5.0 | 15.0 | 18.979 | O | 102 |
| 7652 | 23.0 | 57.0 | 5.0 | 15.0 | 18.694 | O | 102 |
| 7653 | 20.0 | 60.0 | 5.0 | 15.0 | 17.624 | O | 102 |
| 7654 | 10.0 | 70.0 | 5.0 | 15.0 | 14.055 | O | 102 |
| 7655 | 9.0 | 71.0 | 5.0 | 15.0 | 13.643 | O | 102 |
| 7656 | 8.0 | 72.0 | 5.0 | 15.0 | 13.225 | O | 102 |
| 7657 | 7.0 | 73.0 | 5.0 | 15.0 | 12.808 | O | 102 |
| 7658 | 6.0 | 74.0 | 5.0 | 15.0 | 12.390 | O | 102 |
| 7659 | 5.0 | 75.0 | 5.0 | 15.0 | 11.972 | O | 102 |
| 7660 | 4.0 | 76.0 | 5.0 | 15.0 | 11.554 | O | 102 |
| 7661 | 3.0 | 77.0 | 5.0 | 15.0 | 11.136 | O | 102 |
| 7662 | 2.0 | 78.0 | 5.0 | 15.0 | 10.718 | O | 102 |
| 7663 | 1.0 | 79.0 | 5.0 | 15.0 | 10.300 | O | 102 |
| 7664 | 0.0 | 80.0 | 5.0 | 15.0 | 9.882 | O | 102 |
| 7665 | 24.0 | 51.0 | 10.0 | 15.0 | 19.051 | X | 102 |
| 7666 | 23.9 | 51.1 | 10.0 | 15.0 | 19.015 | X | 102 |
| 7667 | 23.8 | 51.2 | 10.0 | 15.0 | 18.980 | O | 102 |
| 7668 | 23.0 | 52.0 | 10.0 | 15.0 | 18.694 | O | 102 |
| 7669 | 20.0 | 55.0 | 10.0 | 15.0 | 17.624 | O | 102 |
| 7670 | 10.0 | 65.0 | 10.0 | 15.0 | 14.056 | O | 102 |
| 7671 | 9.0 | 66.0 | 10.0 | 15.0 | 13.654 | O | 102 |
| 7672 | 8.0 | 67.0 | 10.0 | 15.0 | 13.236 | O | 102 |
| 7673 | 7.0 | 68.0 | 10.0 | 15.0 | 12.818 | O | 102 |
| 7674 | 6.0 | 69.0 | 10.0 | 15.0 | 12.400 | O | 102 |
| 7675 | 5.0 | 70.0 | 10.0 | 15.0 | 11.982 | O | 102 |
| 7676 | 4.0 | 71.0 | 10.0 | 15.0 | 11.564 | O | 102 |
| 7677 | 3.0 | 72.0 | 10.0 | 15.0 | 11.146 | O | 102 |
| 7678 | 2.0 | 73.0 | 10.0 | 15.0 | 10.728 | O | 102 |
| 7679 | 1.0 | 74.0 | 10.0 | 15.0 | 10.310 | O | 102 |
| 7680 | 0.0 | 75.0 | 10.0 | 15.0 | 9.893 | O | 102 |
| 7681 | 24.0 | 46.0 | 15.0 | 15.0 | 19.051 | X | 102 |
| 7682 | 23.9 | 46.1 | 15.0 | 15.0 | 19.016 | X | 102 |
| 7683 | 23.8 | 46.2 | 15.0 | 15.0 | 18.980 | O | 102 |
| 7684 | 23.0 | 47.0 | 15.0 | 15.0 | 18.695 | O | 102 |
| 7685 | 20.0 | 50.0 | 15.0 | 15.0 | 17.624 | O | 102 |
| 7686 | 10.0 | 60.0 | 15.0 | 15.0 | 14.056 | O | 102 |
| 7687 | 9.0 | 61.0 | 15.0 | 15.0 | 13.664 | O | 102 |
| 7688 | 8.0 | 62.0 | 15.0 | 15.0 | 13.246 | O | 102 |
| 7689 | 7.0 | 63.0 | 15.0 | 15.0 | 12.828 | O | 102 |
| 7690 | 6.0 | 64.0 | 15.0 | 15.0 | 12.411 | O | 102 |
| 7691 | 5.0 | 65.0 | 15.0 | 15.0 | 11.993 | O | 102 |
| 7692 | 4.0 | 66.0 | 15.0 | 15.0 | 11.575 | O | 102 |

[Table 135]

| 7693 | 3.0 | 67.0 | 15.0 | 15.0 | 11.157 | O | 102 |
|------|-----|------|------|------|--------|---|-----|
| 7694 | 2.0 | 68.0 | 15.0 | 15.0 | 10.739 | O | 102 |
| 7695 | 1.0 | 69.0 | 15.0 | 15.0 | 10.321 | O | 102 |
| 7696 | 0.0 | 70.0 | 15.0 | 15.0 | 9.903 | O | 102 |
| 7697 | 24.0 | 41.0 | 20.0 | 15.0 | 19.052 | X | 102 |
| 7698 | 23.9 | 41.1 | 20.0 | 15.0 | 19.016 | X | 102 |
| 7699 | 23.8 | 41.2 | 20.0 | 15.0 | 18.980 | O | 102 |
| 7700 | 23.0 | 42.0 | 20.0 | 15.0 | 18.695 | O | 102 |
| 7701 | 20.0 | 45.0 | 20.0 | 15.0 | 17.624 | O | 102 |
| 7702 | 10.0 | 55.0 | 20.0 | 15.0 | 14.056 | O | 102 |
| 7703 | 9.0 | 56.0 | 20.0 | 15.0 | 13.675 | O | 102 |
| 7704 | 8.0 | 57.0 | 20.0 | 15.0 | 13.257 | O | 102 |
| 7705 | 7.0 | 58.0 | 20.0 | 15.0 | 12.839 | O | 102 |
| 7706 | 6.0 | 59.0 | 20.0 | 15.0 | 12.421 | O | 102 |
| 7707 | 5.0 | 60.0 | 20.0 | 15.0 | 12.003 | O | 102 |
| 7708 | 4.0 | 61.0 | 20.0 | 15.0 | 11.585 | O | 102 |
| 7709 | 3.0 | 62.0 | 20.0 | 15.0 | 11.167 | O | 102 |
| 7710 | 2.0 | 63.0 | 20.0 | 15.0 | 10.749 | O | 102 |
| 7711 | 1.0 | 64.0 | 20.0 | 15.0 | 10.331 | O | 102 |
| 7712 | 0.0 | 65.0 | 20.0 | 15.0 | 9.913 | O | 102 |
| 7713 | 24.0 | 36.0 | 25.0 | 15.0 | 19.052 | X | 102 |
| 7714 | 23.9 | 36.1 | 25.0 | 15.0 | 19.016 | X | 102 |
| 7715 | 23.8 | 36.2 | 25.0 | 15.0 | 18.981 | O | 102 |
| 7716 | 23.0 | 37.0 | 25.0 | 15.0 | 18.695 | O | 102 |
| 7717 | 20.0 | 40.0 | 25.0 | 15.0 | 17.625 | O | 102 |
| 7718 | 10.0 | 50.0 | 25.0 | 15.0 | 14.057 | O | 102 |
| 7719 | 9.0 | 51.0 | 25.0 | 15.0 | 13.685 | O | 102 |
| 7720 | 8.0 | 52.0 | 25.0 | 15.0 | 13.267 | O | 102 |
| 7721 | 7.0 | 53.0 | 25.0 | 15.0 | 12.849 | O | 102 |
| 7722 | 6.0 | 54.0 | 25.0 | 15.0 | 12.431 | O | 102 |
| 7723 | 5.0 | 55.0 | 25.0 | 15.0 | 12.013 | O | 102 |
| 7724 | 4.0 | 56.0 | 25.0 | 15.0 | 11.596 | O | 102 |
| 7725 | 3.0 | 57.0 | 25.0 | 15.0 | 11.178 | O | 102 |
| 7726 | 2.0 | 58.0 | 25.0 | 15.0 | 10.760 | O | 102 |
| 7727 | 1.0 | 59.0 | 25.0 | 15.0 | 10.342 | O | 102 |
| 7728 | 0.0 | 60.0 | 25.0 | 15.0 | 9.924 | O | 102 |
| 7729 | 24.0 | 31.0 | 30.0 | 15.0 | 19.052 | X | 102 |
| 7730 | 23.9 | 31.1 | 30.0 | 15.0 | 19.017 | X | 102 |
| 7731 | 23.8 | 31.2 | 30.0 | 15.0 | 18.981 | O | 102 |
| 7732 | 23.0 | 32.0 | 30.0 | 15.0 | 18.695 | O | 102 |
| 7733 | 20.0 | 35.0 | 30.0 | 15.0 | 17.625 | O | 102 |
| 7734 | 10.0 | 45.0 | 30.0 | 15.0 | 14.057 | O | 102 |
| 7735 | 9.0 | 46.0 | 30.0 | 15.0 | 13.696 | O | 102 |
| 7736 | 8.0 | 47.0 | 30.0 | 15.0 | 13.278 | O | 102 |
| 7737 | 7.0 | 48.0 | 30.0 | 15.0 | 12.860 | O | 102 |
| 7738 | 6.0 | 49.0 | 30.0 | 15.0 | 12.442 | O | 102 |
| 7739 | 5.0 | 50.0 | 30.0 | 15.0 | 12.024 | O | 102 |
| 7740 | 4.0 | 51.0 | 30.0 | 15.0 | 11.606 | O | 102 |
| 7741 | 3.0 | 52.0 | 30.0 | 15.0 | 11.188 | O | 102 |
| 7742 | 2.0 | 53.0 | 30.0 | 15.0 | 10.770 | O | 102 |

[Table 136]

| 7743 | 1.0 | 54.0 | 30.0 | 15.0 | 10.352 | O | 102 |
|------|------|------|------|------|--------|---|-----|
| 7744 | 0.0 | 55.0 | 30.0 | 15.0 | 9.934 | O | 102 |
| 7745 | 24.0 | 26.0 | 35.0 | 15.0 | 19.053 | X | 102 |
| 7746 | 23.9 | 26.1 | 35.0 | 15.0 | 19.017 | X | 102 |
| 7747 | 23.8 | 26.2 | 35.0 | 15.0 | 18.981 | O | 102 |
| 7748 | 23.0 | 27.0 | 35.0 | 15.0 | 18.696 | O | 102 |
| 7749 | 20.0 | 30.0 | 35.0 | 15.0 | 17.625 | O | 102 |
| 7750 | 10.0 | 40.0 | 35.0 | 15.0 | 14.057 | O | 102 |
| 7751 | 9.0 | 41.0 | 35.0 | 15.0 | 13.700 | O | 102 |
| 7752 | 8.0 | 42.0 | 35.0 | 15.0 | 13.288 | O | 102 |
| 7753 | 7.0 | 43.0 | 35.0 | 15.0 | 12.870 | O | 102 |
| 7754 | 6.0 | 44.0 | 35.0 | 15.0 | 12.452 | O | 102 |
| 7755 | 5.0 | 45.0 | 35.0 | 15.0 | 12.034 | O | 102 |
| 7756 | 4.0 | 46.0 | 35.0 | 15.0 | 11.616 | O | 102 |
| 7757 | 3.0 | 47.0 | 35.0 | 15.0 | 11.199 | O | 102 |
| 7758 | 2.0 | 48.0 | 35.0 | 15.0 | 10.781 | O | 102 |
| 7759 | 1.0 | 49.0 | 35.0 | 15.0 | 10.363 | O | 102 |
| 7760 | 0.0 | 50.0 | 35.0 | 15.0 | 9.945 | O | 102 |
| 7761 | 24.0 | 21.0 | 40.0 | 15.0 | 19.053 | X | 102 |
| 7762 | 23.9 | 21.1 | 40.0 | 15.0 | 19.017 | X | 102 |
| 7763 | 23.8 | 21.2 | 40.0 | 15.0 | 18.981 | O | 102 |
| 7764 | 23.0 | 22.0 | 40.0 | 15.0 | 18.696 | O | 102 |
| 7765 | 20.0 | 25.0 | 40.0 | 15.0 | 17.626 | O | 102 |
| 7766 | 10.0 | 35.0 | 40.0 | 15.0 | 14.057 | O | 102 |
| 7767 | 9.0 | 36.0 | 40.0 | 15.0 | 13.701 | O | 102 |
| 7768 | 8.0 | 37.0 | 40.0 | 15.0 | 13.299 | O | 102 |
| 7769 | 7.0 | 38.0 | 40.0 | 15.0 | 12.881 | O | 102 |
| 7770 | 6.0 | 39.0 | 40.0 | 15.0 | 12.463 | O | 102 |
| 7771 | 5.0 | 40.0 | 40.0 | 15.0 | 12.045 | O | 102 |
| 7772 | 4.0 | 41.0 | 40.0 | 15.0 | 11.627 | O | 102 |
| 7773 | 3.0 | 42.0 | 40.0 | 15.0 | 11.209 | O | 102 |
| 7774 | 2.0 | 43.0 | 40.0 | 15.0 | 10.791 | O | 102 |
| 7775 | 1.0 | 44.0 | 40.0 | 15.0 | 10.373 | O | 102 |
| 7776 | 0.0 | 45.0 | 40.0 | 15.0 | 9.955 | O | 102 |
| 7777 | 24.0 | 16.0 | 45.0 | 15.0 | 19.053 | X | 102 |
| 7778 | 23.9 | 16.1 | 45.0 | 15.0 | 19.017 | X | 102 |
| 7779 | 23.8 | 16.2 | 45.0 | 15.0 | 18.982 | O | 102 |
| 7780 | 23.0 | 17.0 | 45.0 | 15.0 | 18.696 | O | 102 |
| 7781 | 20.0 | 20.0 | 45.0 | 15.0 | 17.626 | O | 102 |
| 7782 | 10.0 | 30.0 | 45.0 | 15.0 | 14.058 | O | 102 |
| 7783 | 9.0 | 31.0 | 45.0 | 15.0 | 13.701 | O | 102 |
| 7784 | 8.0 | 32.0 | 45.0 | 15.0 | 13.309 | O | 102 |
| 7785 | 7.0 | 33.0 | 45.0 | 15.0 | 12.891 | O | 102 |
| 7786 | 6.0 | 34.0 | 45.0 | 15.0 | 12.473 | O | 102 |
| 7787 | 5.0 | 35.0 | 45.0 | 15.0 | 12.055 | O | 102 |
| 7788 | 4.0 | 36.0 | 45.0 | 15.0 | 11.637 | O | 102 |
| 7789 | 3.0 | 37.0 | 45.0 | 15.0 | 11.219 | O | 102 |
| 7790 | 2.0 | 38.0 | 45.0 | 15.0 | 10.802 | O | 102 |
| 7791 | 1.0 | 39.0 | 45.0 | 15.0 | 10.384 | O | 102 |
| 7792 | 0.0 | 40.0 | 45.0 | 15.0 | 9.966 | O | 102 |

[Table 137]

| 7793 | 24.0 | 11.0 | 50.0 | 15.0 | 19.053 | X | 102 |
|---|---|---|---|---|---|---|---|
| 7794 | 23.9 | 11.1 | 50.0 | 15.0 | 19.018 | X | 102 |
| 7795 | 23.8 | 11.2 | 50.0 | 15.0 | 18.982 | O | 102 |
| 7796 | 23.0 | 12.0 | 50.0 | 15.0 | 18.697 | O | 102 |
| 7797 | 20.0 | 15.0 | 50.0 | 15.0 | 17.626 | O | 102 |
| 7798 | 10.0 | 25.0 | 50.0 | 15.0 | 14.058 | O | 102 |
| 7799 | 9.0 | 26.0 | 50.0 | 15.0 | 13.701 | O | 102 |
| 7800 | 8.0 | 27.0 | 50.0 | 15.0 | 13.320 | O | 102 |
| 7801 | 7.0 | 28.0 | 50.0 | 15.0 | 12.902 | O | 102 |
| 7802 | 6.0 | 29.0 | 50.0 | 15.0 | 12.484 | O | 102 |
| 7803 | 5.0 | 30.0 | 50.0 | 15.0 | 12.066 | O | 102 |
| 7804 | 4.0 | 31.0 | 50.0 | 15.0 | 11.648 | O | 102 |
| 7805 | 3.0 | 32.0 | 50.0 | 15.0 | 11.230 | O | 102 |
| 7806 | 2.0 | 33.0 | 50.0 | 15.0 | 10.812 | O | 102 |
| 7807 | 1.0 | 34.0 | 50.0 | 15.0 | 10.394 | O | 102 |
| 7808 | 0.0 | 35.0 | 50.0 | 15.0 | 9.976 | O | 102 |
| 7809 | 24.0 | 6.0 | 55.0 | 15.0 | 19.054 | X | 102 |
| 7810 | 23.9 | 6.1 | 55.0 | 15.0 | 19.018 | X | 102 |
| 7811 | 23.8 | 6.2 | 55.0 | 15.0 | 18.982 | O | 102 |
| 7812 | 23.0 | 7.0 | 55.0 | 15.0 | 18.697 | O | 102 |
| 7813 | 20.0 | 10.0 | 55.0 | 15.0 | 17.626 | O | 102 |
| 7814 | 10.0 | 20.0 | 55.0 | 15.0 | 14.058 | O | 102 |
| 7815 | 9.0 | 21.0 | 55.0 | 15.0 | 13.701 | O | 102 |
| 7816 | 8.0 | 22.0 | 55.0 | 15.0 | 13.330 | O | 102 |
| 7817 | 7.0 | 23.0 | 55.0 | 15.0 | 12.912 | O | 102 |
| 7818 | 6.0 | 24.0 | 55.0 | 15.0 | 12.494 | O | 102 |
| 7819 | 5.0 | 25.0 | 55.0 | 15.0 | 12.076 | O | 102 |
| 7820 | 4.0 | 26.0 | 55.0 | 15.0 | 11.658 | O | 102 |
| 7821 | 3.0 | 27.0 | 55.0 | 15.0 | 11.240 | O | 102 |
| 7822 | 2.0 | 28.0 | 55.0 | 15.0 | 10.822 | O | 102 |
| 7823 | 1.0 | 29.0 | 55.0 | 15.0 | 10.405 | O | 102 |
| 7824 | 0.0 | 30.0 | 55.0 | 15.0 | 9.987 | O | 102 |
| 7825 | 24.0 | 1.0 | 60.0 | 15.0 | 19.054 | X | 102 |
| 7826 | 23.9 | 1.1 | 60.0 | 15.0 | 19.018 | X | 102 |
| 7827 | 23.8 | 1.2 | 60.0 | 15.0 | 18.983 | O | 102 |
| 7828 | 23.0 | 2.0 | 60.0 | 15.0 | 18.697 | O | 102 |
| 7829 | 20.0 | 5.0 | 60.0 | 15.0 | 17.627 | O | 102 |
| 7830 | 10.0 | 15.0 | 60.0 | 15.0 | 14.059 | O | 102 |
| 7831 | 9.0 | 16.0 | 60.0 | 15.0 | 13.702 | O | 102 |
| 7832 | 8.0 | 17.0 | 60.0 | 15.0 | 13.340 | O | 102 |
| 7833 | 7.0 | 18.0 | 60.0 | 15.0 | 12.922 | O | 102 |
| 7834 | 6.0 | 19.0 | 60.0 | 15.0 | 12.505 | O | 102 |
| 7835 | 5.0 | 20.0 | 60.0 | 15.0 | 12.087 | O | 102 |
| 7836 | 4.0 | 21.0 | 60.0 | 15.0 | 11.669 | O | 102 |
| 7837 | 3.0 | 22.0 | 60.0 | 15.0 | 11.251 | O | 102 |
| 7838 | 2.0 | 23.0 | 60.0 | 15.0 | 10.833 | O | 102 |
| 7839 | 1.0 | 24.0 | 60.0 | 15.0 | 10.415 | O | 102 |
| 7840 | 0.0 | 25.0 | 60.0 | 15.0 | 9.997 | O | 102 |
| 7841 | 25.0 | 50.0 | 5.0 | 20.0 | 19.352 | X | 136 |
| 7842 | 24.1 | 50.9 | 5.0 | 20.0 | 19.031 | X | 136 |

[Table 138]

| 7843 | 24.0 | 51.0 | 5.0 | 20.0 | 18.996 | O | 136 |
|---|---|---|---|---|---|---|---|
| 7844 | 20.0 | 55.0 | 5.0 | 20.0 | 17.568 | O | 136 |
| 7845 | 10.0 | 65.0 | 5.0 | 20.0 | 14.000 | O | 136 |
| 7846 | 9.0 | 66.0 | 5.0 | 20.0 | 13.624 | O | 136 |
| 7847 | 8.0 | 67.0 | 5.0 | 20.0 | 13.206 | O | 136 |
| 7848 | 7.0 | 68.0 | 5.0 | 20.0 | 12.788 | O | 136 |
| 7849 | 6.0 | 69.0 | 5.0 | 20.0 | 12.371 | O | 136 |
| 7850 | 5.0 | 70.0 | 5.0 | 20.0 | 11.953 | O | 136 |
| 7851 | 4.0 | 71.0 | 5.0 | 20.0 | 11.535 | O | 136 |
| 7852 | 3.0 | 72.0 | 5.0 | 20.0 | 11.117 | O | 136 |
| 7853 | 2.0 | 73.0 | 5.0 | 20.0 | 10.699 | O | 136 |
| 7854 | 1.0 | 74.0 | 5.0 | 20.0 | 10.281 | O | 136 |
| 7855 | 0.0 | 75.0 | 5.0 | 20.0 | 9.863 | O | 136 |
| 7856 | 25.0 | 45.0 | 10.0 | 20.0 | 19.353 | X | 136 |
| 7857 | 24.1 | 45.9 | 10.0 | 20.0 | 19.032 | X | 136 |
| 7858 | 24.0 | 46.0 | 10.0 | 20.0 | 18.996 | O | 136 |
| 7859 | 20.0 | 50.0 | 10.0 | 20.0 | 17.569 | O | 136 |
| 7860 | 10.0 | 60.0 | 10.0 | 20.0 | 14.000 | O | 136 |
| 7861 | 9.0 | 61.0 | 10.0 | 20.0 | 13.635 | O | 136 |
| 7862 | 8.0 | 62.0 | 10.0 | 20.0 | 13.217 | O | 136 |
| 7863 | 7.0 | 63.0 | 10.0 | 20.0 | 12.799 | O | 136 |
| 7864 | 6.0 | 64.0 | 10.0 | 20.0 | 12.381 | O | 136 |
| 7865 | 5.0 | 65.0 | 10.0 | 20.0 | 11.963 | O | 136 |
| 7866 | 4.0 | 66.0 | 10.0 | 20.0 | 11.545 | O | 136 |
| 7867 | 3.0 | 67.0 | 10.0 | 20.0 | 11.127 | O | 136 |
| 7868 | 2.0 | 68.0 | 10.0 | 20.0 | 10.709 | O | 136 |
| 7869 | 1.0 | 69.0 | 10.0 | 20.0 | 10.291 | O | 136 |
| 7870 | 0.0 | 70.0 | 10.0 | 20.0 | 9.873 | O | 136 |
| 7871 | 25.0 | 40.0 | 15.0 | 20.0 | 19.353 | X | 136 |
| 7872 | 24.1 | 40.9 | 15.0 | 20.0 | 19.032 | X | 136 |
| 7873 | 24.0 | 41.0 | 15.0 | 20.0 | 18.996 | O | 136 |
| 7874 | 20.0 | 45.0 | 15.0 | 20.0 | 17.569 | O | 136 |
| 7875 | 10.0 | 55.0 | 15.0 | 20.0 | 14.001 | O | 136 |
| 7876 | 9.0 | 56.0 | 15.0 | 20.0 | 13.644 | O | 136 |
| 7877 | 8.0 | 57.0 | 15.0 | 20.0 | 13.227 | O | 136 |
| 7878 | 7.0 | 58.0 | 15.0 | 20.0 | 12.809 | O | 136 |
| 7879 | 6.0 | 59.0 | 15.0 | 20.0 | 12.391 | O | 136 |
| 7880 | 5.0 | 60.0 | 15.0 | 20.0 | 11.974 | O | 136 |
| 7881 | 4.0 | 61.0 | 15.0 | 20.0 | 11.556 | O | 136 |
| 7882 | 3.0 | 62.0 | 15.0 | 20.0 | 11.138 | O | 136 |
| 7883 | 2.0 | 63.0 | 15.0 | 20.0 | 10.720 | O | 136 |
| 7884 | 1.0 | 64.0 | 15.0 | 20.0 | 10.302 | O | 136 |
| 7885 | 0.0 | 65.0 | 15.0 | 20.0 | 9.884 | O | 136 |
| 7886 | 25.0 | 35.0 | 20.0 | 20.0 | 19.353 | X | 136 |
| 7887 | 24.1 | 35.9 | 20.0 | 20.0 | 19.032 | X | 136 |
| 7888 | 24.0 | 36.0 | 20.0 | 20.0 | 18.996 | O | 136 |
| 7889 | 20.0 | 40.0 | 20.0 | 20.0 | 17.569 | O | 136 |
| 7890 | 10.0 | 50.0 | 20.0 | 20.0 | 14.001 | O | 136 |
| 7891 | 9.0 | 51.0 | 20.0 | 20.0 | 13.644 | O | 136 |
| 7892 | 8.0 | 52.0 | 20.0 | 20.0 | 13.238 | O | 136 |

[Table 139]

| | | | | | | | |
|---|---|---|---|---|---|---|---|
| 7893 | 7.0 | 53.0 | 20.0 | 20.0 | 12.820 | O | 136 |
| 7894 | 6.0 | 54.0 | 20.0 | 20.0 | 12.402 | O | 136 |
| 7895 | 5.0 | 55.0 | 20.0 | 20.0 | 11.984 | O | 136 |
| 7896 | 4.0 | 56.0 | 20.0 | 20.0 | 11.566 | O | 136 |
| 7897 | 3.0 | 57.0 | 20.0 | 20.0 | 11.148 | O | 136 |
| 7898 | 2.0 | 58.0 | 20.0 | 20.0 | 10.730 | O | 136 |
| 7899 | 1.0 | 59.0 | 20.0 | 20.0 | 10.312 | O | 136 |
| 7900 | 0.0 | 60.0 | 20.0 | 20.0 | 9.894 | O | 136 |
| 7901 | 25.0 | 30.0 | 25.0 | 20.0 | 19.354 | X | 136 |
| 7902 | 24.1 | 30.9 | 25.0 | 20.0 | 19.032 | X | 136 |
| 7903 | 24.0 | 31.0 | 25.0 | 20.0 | 18.997 | O | 136 |
| 7904 | 20.0 | 35.0 | 25.0 | 20.0 | 17.569 | O | 136 |
| 7905 | 10.0 | 45.0 | 25.0 | 20.0 | 14.001 | O | 136 |
| 7906 | 9.0 | 46.0 | 25.0 | 20.0 | 13.645 | O | 136 |
| 7907 | 8.0 | 47.0 | 25.0 | 20.0 | 13.248 | O | 136 |
| 7908 | 7.0 | 48.0 | 25.0 | 20.0 | 12.830 | O | 136 |
| 7909 | 6.0 | 49.0 | 25.0 | 20.0 | 12.412 | O | 136 |
| 7910 | 5.0 | 50.0 | 25.0 | 20.0 | 11.994 | O | 136 |
| 7911 | 4.0 | 51.0 | 25.0 | 20.0 | 11.577 | O | 136 |
| 7912 | 3.0 | 52.0 | 25.0 | 20.0 | 11.159 | O | 136 |
| 7913 | 2.0 | 53.0 | 25.0 | 20.0 | 10.741 | O | 136 |
| 7914 | 1.0 | 54.0 | 25.0 | 20.0 | 10.323 | O | 136 |
| 7915 | 0.0 | 55.0 | 25.0 | 20.0 | 9.905 | O | 136 |
| 7916 | 25.0 | 25.0 | 30.0 | 20.0 | 19.354 | X | 136 |
| 7917 | 24.1 | 25.9 | 30.0 | 20.0 | 19.033 | X | 136 |
| 7918 | 24.0 | 26.0 | 30.0 | 20.0 | 18.997 | O | 136 |
| 7919 | 20.0 | 30.0 | 30.0 | 20.0 | 17.570 | O | 136 |
| 7920 | 10.0 | 40.0 | 30.0 | 20.0 | 14.002 | O | 136 |
| 7921 | 9.0 | 41.0 | 30.0 | 20.0 | 13.645 | O | 136 |
| 7922 | 8.0 | 42.0 | 30.0 | 20.0 | 13.259 | O | 136 |
| 7923 | 7.0 | 43.0 | 30.0 | 20.0 | 12.841 | O | 136 |
| 7924 | 6.0 | 44.0 | 30.0 | 20.0 | 12.423 | O | 136 |
| 7925 | 5.0 | 45.0 | 30.0 | 20.0 | 12.005 | O | 136 |
| 7926 | 4.0 | 46.0 | 30.0 | 20.0 | 11.587 | O | 136 |
| 7927 | 3.0 | 47.0 | 30.0 | 20.0 | 11.169 | O | 136 |
| 7928 | 2.0 | 48.0 | 30.0 | 20.0 | 10.751 | O | 136 |
| 7929 | 1.0 | 49.0 | 30.0 | 20.0 | 10.333 | O | 136 |
| 7930 | 0.0 | 50.0 | 30.0 | 20.0 | 9.915 | O | 136 |
| 7931 | 25.0 | 20.0 | 35.0 | 20.0 | 19.354 | X | 136 |
| 7932 | 24.1 | 20.9 | 35.0 | 20.0 | 19.033 | X | 136 |
| 7933 | 24.0 | 21.0 | 35.0 | 20.0 | 18.997 | O | 136 |
| 7934 | 20.0 | 25.0 | 35.0 | 20.0 | 17.570 | O | 136 |
| 7935 | 10.0 | 35.0 | 35.0 | 20.0 | 14.002 | O | 136 |
| 7936 | 9.0 | 36.0 | 35.0 | 20.0 | 13.645 | O | 136 |
| 7937 | 8.0 | 37.0 | 35.0 | 20.0 | 13.269 | O | 136 |
| 7938 | 7.0 | 38.0 | 35.0 | 20.0 | 12.851 | O | 136 |
| 7939 | 6.0 | 39.0 | 35.0 | 20.0 | 12.433 | O | 136 |
| 7940 | 5.0 | 40.0 | 35.0 | 20.0 | 12.015 | O | 136 |
| 7941 | 4.0 | 41.0 | 35.0 | 20.0 | 11.597 | O | 136 |
| 7942 | 3.0 | 42.0 | 35.0 | 20.0 | 11.180 | O | 136 |

[Table 140]

| 7943 | 2.0 | 43.0 | 35.0 | 20.0 | 10.762 | O | 136 |
|---|---|---|---|---|---|---|---|
| 7944 | 1.0 | 44.0 | 35.0 | 20.0 | 10.344 | O | 136 |
| 7945 | 0.0 | 45.0 | 35.0 | 20.0 | 9.926 | O | 136 |
| 7946 | 25.0 | 15.0 | 40.0 | 20.0 | 19.354 | X | 136 |
| 7947 | 24.1 | 15.9 | 40.0 | 20.0 | 19.033 | X | 136 |
| 7948 | 24.0 | 16.0 | 40.0 | 20.0 | 18.998 | O | 136 |
| 7949 | 20.0 | 20.0 | 40.0 | 20.0 | 17.570 | O | 136 |
| 7950 | 10.0 | 30.0 | 40.0 | 20.0 | 14.002 | O | 136 |
| 7951 | 9.0 | 36.0 | 35.0 | 20.0 | 13.645 | O | 136 |
| 7952 | 8.0 | 32.0 | 40.0 | 20.0 | 13.280 | O | 136 |
| 7953 | 7.0 | 33.0 | 40.0 | 20.0 | 12.862 | O | 136 |
| 7954 | 6.0 | 34.0 | 40.0 | 20.0 | 12.444 | O | 136 |
| 7955 | 5.0 | 35.0 | 40.0 | 20.0 | 12.026 | O | 136 |
| 7956 | 4.0 | 36.0 | 40.0 | 20.0 | 11.608 | O | 136 |
| 7957 | 3.0 | 37.0 | 40.0 | 20.0 | 11.190 | O | 136 |
| 7958 | 2.0 | 38.0 | 40.0 | 20.0 | 10.772 | O | 136 |
| 7959 | 1.0 | 39.0 | 40.0 | 20.0 | 10.354 | O | 136 |
| 7960 | 0.0 | 40.0 | 40.0 | 20.0 | 9.936 | O | 136 |
| 7961 | 25.0 | 10.0 | 45.0 | 20.0 | 19.355 | X | 136 |
| 7962 | 24.1 | 10.9 | 45.0 | 20.0 | 19.034 | X | 136 |
| 7963 | 24.0 | 11.0 | 45.0 | 20.0 | 18.998 | O | 136 |
| 7964 | 20.0 | 15.0 | 45.0 | 20.0 | 17.571 | O | 136 |
| 7965 | 10.0 | 25.0 | 45.0 | 20.0 | 14.002 | O | 136 |
| 7966 | 9.0 | 26.0 | 45.0 | 20.0 | 13.646 | O | 136 |
| 7967 | 8.0 | 27.0 | 45.0 | 20.0 | 13.289 | O | 136 |
| 7968 | 7.0 | 28.0 | 45.0 | 20.0 | 12.872 | O | 136 |
| 7969 | 6.0 | 29.0 | 45.0 | 20.0 | 12.454 | O | 136 |
| 7970 | 5.0 | 30.0 | 45.0 | 20.0 | 12.036 | O | 136 |
| 7971 | 4.0 | 31.0 | 45.0 | 20.0 | 11.618 | O | 136 |
| 7972 | 3.0 | 32.0 | 45.0 | 20.0 | 11.200 | O | 136 |
| 7973 | 2.0 | 33.0 | 45.0 | 20.0 | 10.782 | O | 136 |
| 7974 | 1.0 | 34.0 | 45.0 | 20.0 | 10.365 | O | 136 |
| 7975 | 0.0 | 35.0 | 45.0 | 20.0 | 9.947 | O | 136 |
| 7976 | 25.0 | 5.0 | 50.0 | 20.0 | 19.355 | X | 136 |
| 7977 | 24.1 | 5.9 | 50.0 | 20.0 | 19.034 | X | 136 |
| 7978 | 24.0 | 6.0 | 50.0 | 20.0 | 18.998 | O | 136 |
| 7979 | 20.0 | 10.0 | 50.0 | 20.0 | 17.571 | O | 136 |
| 7980 | 10.0 | 20.0 | 50.0 | 20.0 | 14.003 | O | 136 |
| 7981 | 9.0 | 21.0 | 50.0 | 20.0 | 13.646 | O | 136 |
| 7982 | 8.0 | 22.0 | 50.0 | 20.0 | 13.289 | O | 136 |
| 7983 | 7.0 | 23.0 | 50.0 | 20.0 | 12.883 | O | 136 |
| 7984 | 6.0 | 24.0 | 50.0 | 20.0 | 12.465 | O | 136 |
| 7985 | 5.0 | 25.0 | 50.0 | 20.0 | 12.047 | O | 136 |
| 7986 | 4.0 | 26.0 | 50.0 | 20.0 | 11.629 | O | 136 |
| 7987 | 3.0 | 27.0 | 50.0 | 20.0 | 11.211 | O | 136 |
| 7988 | 2.0 | 28.0 | 50.0 | 20.0 | 10.793 | O | 136 |
| 7989 | 1.0 | 29.0 | 50.0 | 20.0 | 10.375 | O | 136 |
| 7990 | 0.0 | 30.0 | 50.0 | 20.0 | 9.957 | O | 136 |
| 7991 | 25.0 | 0.0 | 55.0 | 20.0 | 19.355 | X | 136 |
| 7992 | 24.1 | 0.9 | 55.0 | 20.0 | 19.034 | X | 136 |

[Table 141]

| 7993 | 24.0 | 1.0 | 55.0 | 20.0 | 18.998 | O | 136 |
|---|---|---|---|---|---|---|---|
| 7994 | 20.0 | 5.0 | 55.0 | 20.0 | 17.571 | O | 136 |
| 7995 | 10.0 | 15.0 | 55.0 | 20.0 | 14.003 | O | 136 |
| 7996 | 9.0 | 16.0 | 55.0 | 20.0 | 13.646 | O | 136 |
| 7997 | 8.0 | 17.0 | 55.0 | 20.0 | 13.289 | O | 136 |
| 7998 | 7.0 | 18.0 | 55.0 | 20.0 | 12.893 | O | 136 |
| 7999 | 6.0 | 19.0 | 55.0 | 20.0 | 12.475 | O | 136 |
| 8000 | 5.0 | 20.0 | 55.0 | 20.0 | 12.057 | O | 136 |
| 8001 | 4.0 | 21.0 | 55.0 | 20.0 | 11.639 | O | 136 |
| 8002 | 3.0 | 22.0 | 55.0 | 20.0 | 11.221 | O | 136 |
| 8003 | 2.0 | 23.0 | 55.0 | 20.0 | 10.803 | O | 136 |
| 8004 | 1.0 | 24.0 | 55.0 | 20.0 | 10.385 | O | 136 |
| 8005 | 0.0 | 25.0 | 55.0 | 20.0 | 9.968 | O | 136 |
| 8006 | 25.0 | 48.0 | 5.0 | 22.0 | 19.330 | X | 150 |
| 8007 | 24.1 | 48.9 | 5.0 | 22.0 | 19.009 | X | 150 |
| 8008 | 24.0 | 49.0 | 5.0 | 22.0 | 18.973 | O | 150 |
| 8009 | 20.0 | 53.0 | 5.0 | 22.0 | 17.546 | O | 150 |
| 8010 | 10.0 | 63.0 | 5.0 | 22.0 | 13.978 | O | 150 |
| 8011 | 9.0 | 64.0 | 5.0 | 22.0 | 13.617 | O | 150 |
| 8012 | 8.0 | 65.0 | 5.0 | 22.0 | 13.199 | O | 150 |
| 8013 | 7.0 | 66.0 | 5.0 | 22.0 | 12.781 | O | 150 |
| 8014 | 6.0 | 67.0 | 5.0 | 22.0 | 12.363 | O | 150 |
| 8015 | 5.0 | 68.0 | 5.0 | 22.0 | 11.945 | O | 150 |
| 8016 | 4.0 | 69.0 | 5.0 | 22.0 | 11.527 | O | 150 |
| 8017 | 3.0 | 70.0 | 5.0 | 22.0 | 11.109 | O | 150 |
| 8018 | 2.0 | 71.0 | 5.0 | 22.0 | 10.691 | O | 150 |
| 8019 | 1.0 | 72.0 | 5.0 | 22.0 | 10.273 | O | 150 |
| 8020 | 0.0 | 73.0 | 5.0 | 22.0 | 9.855 | O | 150 |
| 8021 | 25.0 | 43.0 | 10.0 | 22.0 | 19.331 | X | 150 |
| 8022 | 24.1 | 43.9 | 10.0 | 22.0 | 19.009 | X | 150 |
| 8023 | 24.0 | 44.0 | 10.0 | 22.0 | 18.974 | O | 150 |
| 8024 | 20.0 | 48.0 | 10.0 | 22.0 | 17.546 | O | 150 |
| 8025 | 10.0 | 58.0 | 10.0 | 22.0 | 13.978 | O | 150 |
| 8026 | 9.0 | 59.0 | 10.0 | 22.0 | 13.622 | O | 150 |
| 8027 | 8.0 | 60.0 | 10.0 | 22.0 | 13.209 | O | 150 |
| 8028 | 7.0 | 61.0 | 10.0 | 22.0 | 12.791 | O | 150 |
| 8029 | 6.0 | 62.0 | 10.0 | 22.0 | 12.373 | O | 150 |
| 8030 | 5.0 | 63.0 | 10.0 | 22.0 | 11.955 | O | 150 |
| 8031 | 4.0 | 64.0 | 10.0 | 22.0 | 11.538 | O | 150 |
| 8032 | 3.0 | 65.0 | 10.0 | 22.0 | 11.120 | O | 150 |
| 8033 | 2.0 | 66.0 | 10.0 | 22.0 | 10.702 | O | 150 |
| 8034 | 1.0 | 67.0 | 10.0 | 22.0 | 10.284 | O | 150 |
| 8035 | 0.0 | 68.0 | 10.0 | 22.0 | 9.866 | O | 150 |
| 8036 | 25.0 | 38.0 | 15.0 | 22.0 | 19.331 | X | 150 |
| 8037 | 24.1 | 38.9 | 15.0 | 22.0 | 19.010 | X | 150 |
| 8038 | 24.0 | 39.0 | 15.0 | 22.0 | 18.974 | O | 150 |
| 8039 | 20.0 | 43.0 | 15.0 | 22.0 | 17.547 | O | 150 |
| 8040 | 10.0 | 53.0 | 15.0 | 22.0 | 13.979 | O | 150 |
| 8041 | 9.0 | 54.0 | 15.0 | 22.0 | 13.622 | O | 150 |
| 8042 | 8.0 | 55.0 | 15.0 | 22.0 | 13.220 | O | 150 |

[Table 142]

| 8043 | 7.0 | 56.0 | 15.0 | 22.0 | 12.802 | O | 150 |
|---|---|---|---|---|---|---|---|
| 8044 | 6.0 | 57.0 | 15.0 | 22.0 | 12.384 | O | 150 |
| 8045 | 5.0 | 58.0 | 15.0 | 22.0 | 11.966 | O | 150 |
| 8046 | 4.0 | 59.0 | 15.0 | 22.0 | 11.548 | O | 150 |
| 8047 | 3.0 | 60.0 | 15.0 | 22.0 | 11.130 | O | 150 |
| 8048 | 2.0 | 61.0 | 15.0 | 22.0 | 10.712 | O | 150 |
| 8049 | 1.0 | 62.0 | 15.0 | 22.0 | 10.294 | O | 150 |
| 8050 | 0.0 | 63.0 | 15.0 | 22.0 | 9.876 | O | 150 |
| 8051 | 25.0 | 33.0 | 20.0 | 22.0 | 19.331 | X | 150 |
| 8052 | 24.1 | 33.9 | 20.0 | 22.0 | 19.010 | X | 150 |
| 8053 | 24.0 | 34.0 | 20.0 | 22.0 | 18.974 | O | 150 |
| 8054 | 20.0 | 38.0 | 20.0 | 22.0 | 17.547 | O | 150 |
| 8055 | 10.0 | 48.0 | 20.0 | 22.0 | 13.979 | O | 150 |
| 8056 | 9.0 | 49.0 | 20.0 | 22.0 | 13.622 | O | 150 |
| 8057 | 8.0 | 50.0 | 20.0 | 22.0 | 13.230 | O | 150 |
| 8058 | 7.0 | 51.0 | 20.0 | 22.0 | 12.812 | O | 150 |
| 8059 | 6.0 | 52.0 | 20.0 | 22.0 | 12.394 | O | 150 |
| 8060 | 5.0 | 53.0 | 20.0 | 22.0 | 11.976 | O | 150 |
| 8061 | 4.0 | 54.0 | 20.0 | 22.0 | 11.558 | O | 150 |
| 8062 | 3.0 | 55.0 | 20.0 | 22.0 | 11.141 | O | 150 |
| 8063 | 2.0 | 56.0 | 20.0 | 22.0 | 10.723 | O | 150 |
| 8064 | 1.0 | 57.0 | 20.0 | 22.0 | 10.305 | O | 150 |
| 8065 | 0.0 | 58.0 | 20.0 | 22.0 | 9.887 | O | 150 |
| 8066 | 25.0 | 28.0 | 25.0 | 22.0 | 19.331 | X | 150 |
| 8067 | 24.1 | 28.9 | 25.0 | 22.0 | 19.010 | X | 150 |
| 8068 | 24.0 | 29.0 | 25.0 | 22.0 | 18.975 | O | 150 |
| 8069 | 20.0 | 33.0 | 25.0 | 22.0 | 17.547 | O | 150 |
| 8070 | 10.0 | 43.0 | 25.0 | 22.0 | 13.979 | O | 150 |
| 8071 | 9.0 | 44.0 | 25.0 | 22.0 | 13.622 | O | 150 |
| 8072 | 8.0 | 45.0 | 25.0 | 22.0 | 13.241 | O | 150 |
| 8073 | 7.0 | 46.0 | 25.0 | 22.0 | 12.823 | O | 150 |
| 8074 | 6.0 | 47.0 | 25.0 | 22.0 | 12.405 | O | 150 |
| 8075 | 5.0 | 48.0 | 25.0 | 22.0 | 11.987 | O | 150 |
| 8076 | 4.0 | 49.0 | 25.0 | 22.0 | 11.569 | O | 150 |
| 8077 | 3.0 | 50.0 | 25.0 | 22.0 | 11.151 | O | 150 |
| 8078 | 2.0 | 51.0 | 25.0 | 22.0 | 10.733 | O | 150 |
| 8079 | 1.0 | 52.0 | 25.0 | 22.0 | 10.315 | O | 150 |
| 8080 | 0.0 | 53.0 | 25.0 | 22.0 | 9.897 | O | 150 |
| 8081 | 25.0 | 23.0 | 30.0 | 22.0 | 19.332 | X | 150 |
| 8082 | 24.1 | 23.9 | 30.0 | 22.0 | 19.011 | X | 150 |
| 8083 | 24.0 | 24.0 | 30.0 | 22.0 | 18.975 | O | 150 |
| 8084 | 20.0 | 28.0 | 30.0 | 22.0 | 17.548 | O | 150 |
| 8085 | 10.0 | 38.0 | 30.0 | 22.0 | 13.980 | O | 150 |
| 8086 | 9.0 | 39.0 | 30.0 | 22.0 | 13.623 | O | 150 |
| 8087 | 8.0 | 40.0 | 30.0 | 22.0 | 13.251 | O | 150 |
| 8088 | 7.0 | 41.0 | 30.0 | 22.0 | 12.833 | O | 150 |
| 8089 | 6.0 | 42.0 | 30.0 | 22.0 | 12.415 | O | 150 |
| 8090 | 5.0 | 43.0 | 30.0 | 22.0 | 11.997 | O | 150 |
| 8091 | 4.0 | 44.0 | 30.0 | 22.0 | 11.579 | O | 150 |
| 8092 | 3.0 | 45.0 | 30.0 | 22.0 | 11.161 | O | 150 |

[Table 143]

| 8093 | 2.0 | 46.0 | 30.0 | 22.0 | 10.744 | O | 150 |
|---|---|---|---|---|---|---|---|
| 8094 | 1.0 | 47.0 | 30.0 | 22.0 | 10.326 | O | 150 |
| 8095 | 0.0 | 48.0 | 30.0 | 22.0 | 9.908 | O | 150 |
| 8096 | 25.0 | 18.0 | 35.0 | 22.0 | 19.332 | X | 150 |
| 8097 | 24.1 | 18.9 | 35.0 | 22.0 | 19.011 | X | 150 |
| 8098 | 24.0 | 19.0 | 35.0 | 22.0 | 18.975 | O | 150 |
| 8099 | 20.0 | 23.0 | 35.0 | 22.0 | 17.548 | O | 150 |
| 8100 | 10.0 | 33.0 | 35.0 | 22.0 | 13.980 | O | 150 |
| 8101 | 9.0 | 34.0 | 35.0 | 22.0 | 13.623 | O | 150 |
| 8102 | 8.0 | 35.0 | 35.0 | 22.0 | 13.261 | O | 150 |
| 8103 | 7.0 | 36.0 | 35.0 | 22.0 | 12.844 | O | 150 |
| 8104 | 6.0 | 37.0 | 35.0 | 22.0 | 12.426 | O | 150 |
| 8105 | 5.0 | 38.0 | 35.0 | 22.0 | 12.008 | O | 150 |
| 8106 | 4.0 | 39.0 | 35.0 | 22.0 | 11.590 | O | 150 |
| 8107 | 3.0 | 40.0 | 35.0 | 22.0 | 11.172 | O | 150 |
| 8108 | 2.0 | 41.0 | 35.0 | 22.0 | 10.754 | O | 150 |
| 8109 | 1.0 | 42.0 | 35.0 | 22.0 | 10.336 | O | 150 |
| 8110 | 0.0 | 43.0 | 35.0 | 22.0 | 9.918 | O | 150 |
| 8111 | 25.0 | 13.0 | 40.0 | 22.0 | 19.332 | X | 150 |
| 8112 | 24.1 | 13.9 | 40.0 | 22.0 | 19.011 | X | 150 |
| 8113 | 24.0 | 14.0 | 40.0 | 22.0 | 18.975 | O | 150 |
| 8114 | 20.0 | 18.0 | 40.0 | 22.0 | 17.548 | O | 150 |
| 8115 | 10.0 | 28.0 | 40.0 | 22.0 | 13.980 | O | 150 |
| 8116 | 9.0 | 34.0 | 35.0 | 22.0 | 13.623 | O | 150 |
| 8117 | 8.0 | 30.0 | 40.0 | 22.0 | 13.266 | O | 150 |
| 8118 | 7.0 | 31.0 | 40.0 | 22.0 | 12.854 | O | 150 |
| 8119 | 6.0 | 32.0 | 40.0 | 22.0 | 12.436 | O | 150 |
| 8120 | 5.0 | 33.0 | 40.0 | 22.0 | 12.018 | O | 150 |
| 8121 | 4.0 | 34.0 | 40.0 | 22.0 | 11.600 | O | 150 |
| 8122 | 3.0 | 35.0 | 40.0 | 22.0 | 11.182 | O | 150 |
| 8123 | 2.0 | 36.0 | 40.0 | 22.0 | 10.764 | O | 150 |
| 8124 | 1.0 | 37.0 | 40.0 | 22.0 | 10.346 | O | 150 |
| 8125 | 0.0 | 38.0 | 40.0 | 22.0 | 9.929 | O | 150 |
| 8126 | 25.0 | 8.0 | 45.0 | 22.0 | 19.333 | X | 150 |
| 8127 | 24.1 | 8.9 | 45.0 | 22.0 | 19.011 | X | 150 |
| 8128 | 24.0 | 9.0 | 45.0 | 22.0 | 18.976 | O | 150 |
| 8129 | 20.0 | 13.0 | 45.0 | 22.0 | 17.549 | O | 150 |
| 8130 | 10.0 | 23.0 | 45.0 | 22.0 | 13.980 | O | 150 |
| 8131 | 9.0 | 24.0 | 45.0 | 22.0 | 13.624 | O | 150 |
| 8132 | 8.0 | 25.0 | 45.0 | 22.0 | 13.267 | O | 150 |
| 8133 | 7.0 | 26.0 | 45.0 | 22.0 | 12.864 | O | 150 |
| 8134 | 6.0 | 27.0 | 45.0 | 22.0 | 12.447 | O | 150 |
| 8135 | 5.0 | 28.0 | 45.0 | 22.0 | 12.029 | O | 150 |
| 8136 | 4.0 | 29.0 | 45.0 | 22.0 | 11.611 | O | 150 |
| 8137 | 3.0 | 30.0 | 45.0 | 22.0 | 11.193 | O | 150 |
| 8138 | 2.0 | 31.0 | 45.0 | 22.0 | 10.775 | O | 150 |
| 8139 | 1.0 | 32.0 | 45.0 | 22.0 | 10.357 | O | 150 |
| 8140 | 0.0 | 33.0 | 45.0 | 22.0 | 9.939 | O | 150 |
| 8141 | 25.0 | 3.0 | 50.0 | 22.0 | 19.333 | X | 150 |
| 8142 | 24.1 | 3.9 | 50.0 | 22.0 | 19.012 | X | 150 |

[Table 144]

| 8143 | 24.0 | 4.0 | 50.0 | 22.0 | 18.976 | O | 150 |
|------|------|------|------|------|--------|---|-----|
| 8144 | 20.0 | 8.0 | 50.0 | 22.0 | 17.549 | O | 150 |
| 8145 | 10.0 | 18.0 | 50.0 | 22.0 | 13.981 | O | 150 |
| 8146 | 9.0 | 19.0 | 50.0 | 22.0 | 13.624 | O | 150 |
| 8147 | 8.0 | 20.0 | 50.0 | 22.0 | 13.267 | O | 150 |
| 8148 | 7.0 | 21.0 | 50.0 | 22.0 | 12.875 | O | 150 |
| 8149 | 6.0 | 22.0 | 50.0 | 22.0 | 12.457 | O | 150 |
| 8150 | 5.0 | 23.0 | 50.0 | 22.0 | 12.039 | O | 150 |
| 8151 | 4.0 | 24.0 | 50.0 | 22.0 | 11.621 | O | 150 |
| 8152 | 3.0 | 25.0 | 50.0 | 22.0 | 11.203 | O | 150 |
| 8153 | 2.0 | 26.0 | 50.0 | 22.0 | 10.785 | O | 150 |
| 8154 | 1.0 | 27.0 | 50.0 | 22.0 | 10.367 | O | 150 |
| 8155 | 0.0 | 28.0 | 50.0 | 22.0 | 9.949 | O | 150 |

Tables 145 to 165 show the composition, combustion heat amount, and GWP of the working medium of a four-component system of propane, HFO-1123, HFO-1234ze(E), and $CO_2$.

[Table 145]

| Case | propane | HFO-1123 | HFO-1234ze(E) | $CO_2$ | Heat of Combustion | Evaluation | GWP |
|---|---|---|---|---|---|---|---|
| 8156 | 24.0 | 69.0 | 5.0 | 2.0 | 19.004 | X | 1 |
| 8157 | 23.9 | 69.1 | 5.0 | 2.0 | 18.968 | O | 1 |
| 8158 | 23.0 | 70.0 | 5.0 | 2.0 | 18.647 | O | 1 |
| 8159 | 20.0 | 73.0 | 5.0 | 2.0 | 17.576 | O | 1 |
| 8160 | 10.0 | 83.0 | 5.0 | 2.0 | 13.920 | O | 1 |
| 8161 | 9.0 | 84.0 | 5.0 | 2.0 | 13.502 | O | 1 |
| 8162 | 8.0 | 85.0 | 5.0 | 2.0 | 13.084 | O | 1 |
| 8163 | 7.0 | 86.0 | 5.0 | 2.0 | 12.666 | O | 1 |
| 8164 | 6.0 | 87.0 | 5.0 | 2.0 | 12.248 | O | 1 |
| 8165 | 5.0 | 88.0 | 5.0 | 2.0 | 11.830 | O | 1 |
| 8166 | 4.0 | 89.0 | 5.0 | 2.0 | 11.412 | O | 1 |
| 8167 | 3.0 | 90.0 | 5.0 | 2.0 | 10.994 | O | 1 |
| 8168 | 2.0 | 91.0 | 5.0 | 2.0 | 10.577 | O | 1 |
| 8169 | 1.0 | 92.0 | 5.0 | 2.0 | 10.159 | O | 1 |
| 8170 | 0.0 | 93.0 | 5.0 | 2.0 | 9.741 | O | 1 |
| 8171 | 24.0 | 64.0 | 10.0 | 2.0 | 19.004 | X | 1 |
| 8172 | 23.9 | 64.1 | 10.0 | 2.0 | 18.968 | O | 1 |
| 8173 | 23.0 | 65.0 | 10.0 | 2.0 | 18.647 | O | 1 |
| 8174 | 20.0 | 68.0 | 10.0 | 2.0 | 17.577 | O | 1 |
| 8175 | 10.0 | 78.0 | 10.0 | 2.0 | 13.930 | O | 1 |
| 8176 | 9.0 | 79.0 | 10.0 | 2.0 | 13.512 | O | 1 |
| 8177 | 8.0 | 80.0 | 10.0 | 2.0 | 13.094 | O | 1 |
| 8178 | 7.0 | 81.0 | 10.0 | 2.0 | 12.677 | O | 1 |
| 8179 | 6.0 | 82.0 | 10.0 | 2.0 | 12.259 | O | 1 |
| 8180 | 5.0 | 83.0 | 10.0 | 2.0 | 11.841 | O | 1 |
| 8181 | 4.0 | 84.0 | 10.0 | 2.0 | 11.423 | O | 1 |
| 8182 | 3.0 | 85.0 | 10.0 | 2.0 | 11.005 | O | 1 |
| 8183 | 2.0 | 86.0 | 10.0 | 2.0 | 10.587 | O | 1 |
| 8184 | 1.0 | 87.0 | 10.0 | 2.0 | 10.169 | O | 1 |
| 8185 | 0.0 | 88.0 | 10.0 | 2.0 | 9.751 | O | 1 |
| 8186 | 24.0 | 59.0 | 15.0 | 2.0 | 19.004 | X | 1 |
| 8187 | 23.9 | 59.1 | 15.0 | 2.0 | 18.968 | O | 1 |
| 8188 | 23.0 | 60.0 | 15.0 | 2.0 | 18.647 | O | 1 |
| 8189 | 20.0 | 63.0 | 15.0 | 2.0 | 17.577 | O | 1 |
| 8190 | 10.0 | 73.0 | 15.0 | 2.0 | 13.941 | O | 1 |
| 8191 | 9.0 | 74.0 | 15.0 | 2.0 | 13.523 | O | 1 |
| 8192 | 8.0 | 75.0 | 15.0 | 2.0 | 13.105 | O | 1 |
| 8193 | 7.0 | 76.0 | 15.0 | 2.0 | 12.687 | O | 1 |
| 8194 | 6.0 | 77.0 | 15.0 | 2.0 | 12.269 | O | 1 |
| 8195 | 5.0 | 78.0 | 15.0 | 2.0 | 11.851 | O | 1 |
| 8196 | 4.0 | 79.0 | 15.0 | 2.0 | 11.433 | O | 1 |
| 8197 | 3.0 | 80.0 | 15.0 | 2.0 | 11.015 | O | 1 |
| 8198 | 2.0 | 81.0 | 15.0 | 2.0 | 10.597 | O | 1 |
| 8199 | 1.0 | 82.0 | 15.0 | 2.0 | 10.180 | O | 1 |
| 8200 | 0.0 | 83.0 | 15.0 | 2.0 | 9.762 | O | 1 |
| 8201 | 24.0 | 54.0 | 20.0 | 2.0 | 19.004 | X | 1 |
| 8202 | 23.9 | 54.1 | 20.0 | 2.0 | 18.969 | O | 1 |
| 8203 | 23.0 | 55.0 | 20.0 | 2.0 | 18.648 | O | 1 |
| 8204 | 20.0 | 58.0 | 20.0 | 2.0 | 17.577 | O | 1 |
| 8205 | 10.0 | 68.0 | 20.0 | 2.0 | 13.951 | O | 1 |

[Table 146]

| 8206 | 9.0 | 69.0 | 20.0 | 2.0 | 13.533 | O | 1 |
|---|---|---|---|---|---|---|---|
| 8207 | 8.0 | 70.0 | 20.0 | 2.0 | 13.115 | O | 1 |
| 8208 | 7.0 | 71.0 | 20.0 | 2.0 | 12.697 | O | 1 |
| 8209 | 6.0 | 72.0 | 20.0 | 2.0 | 12.280 | O | 1 |
| 8210 | 5.0 | 73.0 | 20.0 | 2.0 | 11.862 | O | 1 |
| 8211 | 4.0 | 74.0 | 20.0 | 2.0 | 11.444 | O | 1 |
| 8212 | 3.0 | 75.0 | 20.0 | 2.0 | 11.026 | O | 1 |
| 8213 | 2.0 | 76.0 | 20.0 | 2.0 | 10.608 | O | 1 |
| 8214 | 1.0 | 77.0 | 20.0 | 2.0 | 10.190 | O | 1 |
| 8215 | 0.0 | 78.0 | 20.0 | 2.0 | 9.772 | O | 1 |
| 8216 | 24.0 | 49.0 | 25.0 | 2.0 | 19.005 | X | 1 |
| 8217 | 23.9 | 49.1 | 25.0 | 2.0 | 18.969 | O | 1 |
| 8218 | 23.0 | 50.0 | 25.0 | 2.0 | 18.648 | O | 1 |
| 8219 | 20.0 | 53.0 | 25.0 | 2.0 | 17.577 | O | 1 |
| 8220 | 10.0 | 63.0 | 25.0 | 2.0 | 13.962 | O | 1 |
| 8221 | 9.0 | 64.0 | 25.0 | 2.0 | 13.544 | O | 1 |
| 8222 | 8.0 | 65.0 | 25.0 | 2.0 | 13.126 | O | 1 |
| 8223 | 7.0 | 66.0 | 25.0 | 2.0 | 12.708 | O | 1 |
| 8224 | 6.0 | 67.0 | 25.0 | 2.0 | 12.290 | O | 1 |
| 8225 | 5.0 | 68.0 | 25.0 | 2.0 | 11.872 | O | 1 |
| 8226 | 4.0 | 69.0 | 25.0 | 2.0 | 11.454 | O | 1 |
| 8227 | 3.0 | 70.0 | 25.0 | 2.0 | 11.036 | O | 1 |
| 8228 | 2.0 | 71.0 | 25.0 | 2.0 | 10.618 | O | 1 |
| 8229 | 1.0 | 72.0 | 25.0 | 2.0 | 10.200 | O | 1 |
| 8230 | 0.0 | 73.0 | 25.0 | 2.0 | 9.782 | O | 1 |
| 8231 | 24.0 | 44.0 | 30.0 | 2.0 | 19.005 | X | 1 |
| 8232 | 23.9 | 44.1 | 30.0 | 2.0 | 18.969 | O | 1 |
| 8233 | 23.0 | 45.0 | 30.0 | 2.0 | 18.648 | O | 1 |
| 8234 | 20.0 | 48.0 | 30.0 | 2.0 | 17.578 | O | 1 |
| 8235 | 10.0 | 58.0 | 30.0 | 2.0 | 13.972 | O | 1 |
| 8236 | 9.0 | 59.0 | 30.0 | 2.0 | 13.554 | O | 1 |
| 8237 | 8.0 | 60.0 | 30.0 | 2.0 | 13.136 | O | 1 |
| 8238 | 7.0 | 61.0 | 30.0 | 2.0 | 12.718 | O | 1 |
| 8239 | 6.0 | 62.0 | 30.0 | 2.0 | 12.300 | O | 1 |
| 8240 | 5.0 | 63.0 | 30.0 | 2.0 | 11.883 | O | 1 |
| 8241 | 4.0 | 64.0 | 30.0 | 2.0 | 11.465 | O | 1 |
| 8242 | 3.0 | 65.0 | 30.0 | 2.0 | 11.047 | O | 1 |
| 8243 | 2.0 | 66.0 | 30.0 | 2.0 | 10.629 | O | 1 |
| 8244 | 1.0 | 67.0 | 30.0 | 2.0 | 10.211 | O | 1 |
| 8245 | 0.0 | 68.0 | 30.0 | 2.0 | 9.793 | O | 1 |
| 8246 | 24.0 | 39.0 | 35.0 | 2.0 | 19.005 | X | 1 |
| 8247 | 23.9 | 39.1 | 35.0 | 2.0 | 18.970 | O | 1 |
| 8248 | 23.0 | 40.0 | 35.0 | 2.0 | 18.648 | O | 1 |
| 8249 | 20.0 | 43.0 | 35.0 | 2.0 | 17.578 | O | 1 |
| 8250 | 10.0 | 53.0 | 35.0 | 2.0 | 13.983 | O | 1 |
| 8251 | 9.0 | 54.0 | 35.0 | 2.0 | 13.565 | O | 1 |
| 8252 | 8.0 | 55.0 | 35.0 | 2.0 | 13.147 | O | 1 |
| 8253 | 7.0 | 56.0 | 35.0 | 2.0 | 12.729 | O | 1 |
| 8254 | 6.0 | 57.0 | 35.0 | 2.0 | 12.311 | O | 1 |
| 8255 | 5.0 | 58.0 | 35.0 | 2.0 | 11.893 | O | 1 |

[Table 147]

| 8256 | 4.0 | 59.0 | 35.0 | 2.0 | 11.475 | O | 1 |
|------|-----|------|------|-----|--------|---|---|
| 8257 | 3.0 | 60.0 | 35.0 | 2.0 | 11.057 | O | 1 |
| 8258 | 2.0 | 61.0 | 35.0 | 2.0 | 10.639 | O | 1 |
| 8259 | 1.0 | 62.0 | 35.0 | 2.0 | 10.221 | O | 1 |
| 8260 | 0.0 | 63.0 | 35.0 | 2.0 | 9.803 | O | 1 |
| 8261 | 24.0 | 34.0 | 40.0 | 2.0 | 19.006 | X | 1 |
| 8262 | 23.9 | 34.1 | 40.0 | 2.0 | 18.970 | O | 1 |
| 8263 | 23.0 | 35.0 | 40.0 | 2.0 | 18.649 | O | 1 |
| 8264 | 20.0 | 38.0 | 40.0 | 2.0 | 17.578 | O | 1 |
| 8265 | 10.0 | 48.0 | 40.0 | 2.0 | 13.993 | O | 1 |
| 8266 | 9.0 | 49.0 | 40.0 | 2.0 | 13.575 | O | 1 |
| 8267 | 8.0 | 50.0 | 40.0 | 2.0 | 13.157 | O | 1 |
| 8268 | 7.0 | 51.0 | 40.0 | 2.0 | 12.739 | O | 1 |
| 8269 | 6.0 | 52.0 | 40.0 | 2.0 | 12.321 | O | 1 |
| 8270 | 5.0 | 53.0 | 40.0 | 2.0 | 11.903 | O | 1 |
| 8271 | 4.0 | 54.0 | 40.0 | 2.0 | 11.486 | O | 1 |
| 8272 | 3.0 | 55.0 | 40.0 | 2.0 | 11.068 | O | 1 |
| 8273 | 2.0 | 56.0 | 40.0 | 2.0 | 10.650 | O | 1 |
| 8274 | 1.0 | 57.0 | 40.0 | 2.0 | 10.232 | O | 1 |
| 8275 | 0.0 | 58.0 | 40.0 | 2.0 | 9.814 | O | 1 |
| 8276 | 24.0 | 29.0 | 45.0 | 2.0 | 19.006 | X | 1 |
| 8277 | 23.9 | 29.1 | 45.0 | 2.0 | 18.970 | O | 1 |
| 8278 | 23.0 | 30.0 | 45.0 | 2.0 | 18.649 | O | 1 |
| 8279 | 20.0 | 33.0 | 45.0 | 2.0 | 17.579 | O | 1 |
| 8280 | 10.0 | 43.0 | 45.0 | 2.0 | 14.003 | O | 1 |
| 8281 | 9.0 | 44.0 | 45.0 | 2.0 | 13.586 | O | 1 |
| 8282 | 8.0 | 45.0 | 45.0 | 2.0 | 13.168 | O | 1 |
| 8283 | 7.0 | 46.0 | 45.0 | 2.0 | 12.750 | O | 1 |
| 8284 | 6.0 | 47.0 | 45.0 | 2.0 | 12.332 | O | 1 |
| 8285 | 5.0 | 48.0 | 45.0 | 2.0 | 11.914 | O | 1 |
| 8286 | 4.0 | 49.0 | 45.0 | 2.0 | 11.496 | O | 1 |
| 8287 | 3.0 | 50.0 | 45.0 | 2.0 | 11.078 | O | 1 |
| 8288 | 2.0 | 51.0 | 45.0 | 2.0 | 10.660 | O | 1 |
| 8289 | 1.0 | 52.0 | 45.0 | 2.0 | 10.242 | O | 1 |
| 8290 | 0.0 | 53.0 | 45.0 | 2.0 | 9.824 | O | 1 |
| 8291 | 24.0 | 24.0 | 50.0 | 2.0 | 19.006 | X | 1 |
| 8292 | 23.9 | 24.1 | 50.0 | 2.0 | 18.970 | O | 1 |
| 8293 | 23.0 | 25.0 | 50.0 | 2.0 | 18.649 | O | 1 |
| 8294 | 20.0 | 28.0 | 50.0 | 2.0 | 17.579 | O | 1 |
| 8295 | 10.0 | 38.0 | 50.0 | 2.0 | 14.011 | O | 1 |
| 8296 | 9.0 | 39.0 | 50.0 | 2.0 | 13.596 | O | 1 |
| 8297 | 8.0 | 40.0 | 50.0 | 2.0 | 13.178 | O | 1 |
| 8298 | 7.0 | 41.0 | 50.0 | 2.0 | 12.760 | O | 1 |
| 8299 | 6.0 | 42.0 | 50.0 | 2.0 | 12.342 | O | 1 |
| 8300 | 5.0 | 43.0 | 50.0 | 2.0 | 11.924 | O | 1 |
| 8301 | 4.0 | 44.0 | 50.0 | 2.0 | 11.506 | O | 1 |
| 8302 | 3.0 | 45.0 | 50.0 | 2.0 | 11.089 | O | 1 |
| 8303 | 2.0 | 46.0 | 50.0 | 2.0 | 10.671 | O | 1 |
| 8304 | 1.0 | 47.0 | 50.0 | 2.0 | 10.253 | O | 1 |
| 8305 | 0.0 | 48.0 | 50.0 | 2.0 | 9.835 | O | 1 |

[Table 148]

| | | | | | | | |
|---|---|---|---|---|---|---|---|
| 8306 | 24.0 | 19.0 | 55.0 | 2.0 | 19.006 | X | 1 |
| 8307 | 23.9 | 19.1 | 55.0 | 2.0 | 18.971 | O | 1 |
| 8308 | 23.0 | 20.0 | 55.0 | 2.0 | 18.650 | O | 1 |
| 8309 | 20.0 | 23.0 | 55.0 | 2.0 | 17.579 | O | 1 |
| 8310 | 10.0 | 33.0 | 55.0 | 2.0 | 14.011 | O | 1 |
| 8311 | 9.0 | 34.0 | 55.0 | 2.0 | 13.606 | O | 1 |
| 8312 | 8.0 | 35.0 | 55.0 | 2.0 | 13.189 | O | 1 |
| 8313 | 7.0 | 36.0 | 55.0 | 2.0 | 12.771 | O | 1 |
| 8314 | 6.0 | 37.0 | 55.0 | 2.0 | 12.353 | O | 1 |
| 8315 | 5.0 | 38.0 | 55.0 | 2.0 | 11.935 | O | 1 |
| 8316 | 4.0 | 39.0 | 55.0 | 2.0 | 11.517 | O | 1 |
| 8317 | 3.0 | 40.0 | 55.0 | 2.0 | 11.099 | O | 1 |
| 8318 | 2.0 | 41.0 | 55.0 | 2.0 | 10.681 | O | 1 |
| 8319 | 1.0 | 42.0 | 55.0 | 2.0 | 10.263 | O | 1 |
| 8320 | 0.0 | 43.0 | 55.0 | 2.0 | 9.845 | O | 1 |
| 8321 | 24.0 | 14.0 | 60.0 | 2.0 | 19.007 | X | 1 |
| 8322 | 23.9 | 14.1 | 60.0 | 2.0 | 18.971 | O | 1 |
| 8323 | 23.0 | 15.0 | 60.0 | 2.0 | 18.650 | O | 1 |
| 8324 | 20.0 | 18.0 | 60.0 | 2.0 | 17.579 | O | 1 |
| 8325 | 10.0 | 28.0 | 60.0 | 2.0 | 14.011 | O | 1 |
| 8326 | 9.0 | 29.0 | 60.0 | 2.0 | 13.617 | O | 1 |
| 8327 | 8.0 | 30.0 | 60.0 | 2.0 | 13.199 | O | 1 |
| 8328 | 7.0 | 31.0 | 60.0 | 2.0 | 12.781 | O | 1 |
| 8329 | 6.0 | 32.0 | 60.0 | 2.0 | 12.363 | O | 1 |
| 8330 | 5.0 | 33.0 | 60.0 | 2.0 | 11.945 | O | 1 |
| 8331 | 4.0 | 34.0 | 60.0 | 2.0 | 11.527 | O | 1 |
| 8332 | 3.0 | 35.0 | 60.0 | 2.0 | 11.109 | O | 1 |
| 8333 | 2.0 | 36.0 | 60.0 | 2.0 | 10.691 | O | 1 |
| 8334 | 1.0 | 37.0 | 60.0 | 2.0 | 10.274 | O | 1 |
| 8335 | 0.0 | 38.0 | 60.0 | 2.0 | 9.856 | O | 1 |
| 8336 | 24.0 | 9.0 | 65.0 | 2.0 | 19.007 | X | 1 |
| 8337 | 23.9 | 9.1 | 65.0 | 2.0 | 18.971 | O | 1 |
| 8338 | 23.0 | 10.0 | 65.0 | 2.0 | 18.650 | O | 1 |
| 8339 | 20.0 | 13.0 | 65.0 | 2.0 | 17.580 | O | 1 |
| 8340 | 10.0 | 23.0 | 65.0 | 2.0 | 14.012 | O | 1 |
| 8341 | 9.0 | 24.0 | 65.0 | 2.0 | 13.627 | O | 1 |
| 8342 | 8.0 | 25.0 | 65.0 | 2.0 | 13.209 | O | 1 |
| 8343 | 7.0 | 26.0 | 65.0 | 2.0 | 12.792 | O | 1 |
| 8344 | 6.0 | 27.0 | 65.0 | 2.0 | 12.374 | O | 1 |
| 8345 | 5.0 | 28.0 | 65.0 | 2.0 | 11.956 | O | 1 |
| 8346 | 4.0 | 29.0 | 65.0 | 2.0 | 11.538 | O | 1 |
| 8347 | 3.0 | 30.0 | 65.0 | 2.0 | 11.120 | O | 1 |
| 8348 | 2.0 | 31.0 | 65.0 | 2.0 | 10.702 | O | 1 |
| 8349 | 1.0 | 32.0 | 65.0 | 2.0 | 10.284 | O | 1 |
| 8350 | 0.0 | 33.0 | 65.0 | 2.0 | 9.866 | O | 1 |
| 8351 | 24.0 | 4.0 | 70.0 | 2.0 | 19.007 | X | 1 |
| 8352 | 23.9 | 4.1 | 70.0 | 2.0 | 18.972 | O | 1 |
| 8353 | 23.0 | 5.0 | 70.0 | 2.0 | 18.650 | O | 1 |
| 8354 | 20.0 | 8.0 | 70.0 | 2.0 | 17.580 | O | 1 |
| 8355 | 10.0 | 18.0 | 70.0 | 2.0 | 14.012 | O | 1 |

[Table 149]

| 8356 | 9.0 | 19.0 | 70.0 | 2.0 | 13.638 | O | 1 |
| 8357 | 8.0 | 20.0 | 70.0 | 2.0 | 13.220 | O | 1 |
| 8358 | 7.0 | 21.0 | 70.0 | 2.0 | 12.802 | O | 1 |
| 8359 | 6.0 | 22.0 | 70.0 | 2.0 | 12.384 | O | 1 |
| 8360 | 5.0 | 23.0 | 70.0 | 2.0 | 11.966 | O | 1 |
| 8361 | 4.0 | 24.0 | 70.0 | 2.0 | 11.548 | O | 1 |
| 8362 | 3.0 | 25.0 | 70.0 | 2.0 | 11.130 | O | 1 |
| 8363 | 2.0 | 26.0 | 70.0 | 2.0 | 10.712 | O | 1 |
| 8364 | 1.0 | 27.0 | 70.0 | 2.0 | 10.294 | O | 1 |
| 8365 | 0.0 | 28.0 | 70.0 | 2.0 | 9.877 | O | 1 |
| 8366 | 25.0 | 66.0 | 5.0 | 4.0 | 19.147 | X | 1 |
| 8367 | 24.6 | 66.4 | 5.0 | 4.0 | 19.005 | X | 1 |
| 8368 | 24.5 | 66.5 | 5.0 | 4.0 | 18.969 | O | 1 |
| 8369 | 24.0 | 67.0 | 5.0 | 4.0 | 18.790 | O | 1 |
| 8370 | 20.0 | 71.0 | 5.0 | 4.0 | 17.363 | O | 1 |
| 8371 | 10.0 | 81.0 | 5.0 | 4.0 | 13.721 | O | 1 |
| 8372 | 9.0 | 82.0 | 5.0 | 4.0 | 13.303 | O | 1 |
| 8373 | 8.0 | 83.0 | 5.0 | 4.0 | 12.885 | O | 1 |
| 8374 | 7.0 | 84.0 | 5.0 | 4.0 | 12.468 | O | 1 |
| 8375 | 6.0 | 85.0 | 5.0 | 4.0 | 12.050 | O | 1 |
| 8376 | 5.0 | 86.0 | 5.0 | 4.0 | 11.632 | O | 1 |
| 8377 | 4.0 | 87.0 | 5.0 | 4.0 | 11.214 | O | 1 |
| 8378 | 3.0 | 88.0 | 5.0 | 4.0 | 10.796 | O | 1 |
| 8379 | 2.0 | 89.0 | 5.0 | 4.0 | 10.378 | O | 1 |
| 8380 | 1.0 | 90.0 | 5.0 | 4.0 | 9.960 | O | 1 |
| 8381 | 0.0 | 91.0 | 5.0 | 4.0 | 9.542 | O | 1 |
| 8382 | 25.0 | 61.0 | 10.0 | 4.0 | 19.148 | X | 1 |
| 8383 | 24.6 | 61.4 | 10.0 | 4.0 | 19.005 | X | 1 |
| 8384 | 24.5 | 61.5 | 10.0 | 4.0 | 18.969 | O | 1 |
| 8385 | 24.0 | 62.0 | 10.0 | 4.0 | 18.791 | O | 1 |
| 8386 | 20.0 | 66.0 | 10.0 | 4.0 | 17.363 | O | 1 |
| 8387 | 10.0 | 76.0 | 10.0 | 4.0 | 13.732 | O | 1 |
| 8388 | 9.0 | 77.0 | 10.0 | 4.0 | 13.314 | O | 1 |
| 8389 | 8.0 | 78.0 | 10.0 | 4.0 | 12.896 | O | 1 |
| 8390 | 7.0 | 79.0 | 10.0 | 4.0 | 12.478 | O | 1 |
| 8391 | 6.0 | 80.0 | 10.0 | 4.0 | 12.060 | O | 1 |
| 8392 | 5.0 | 81.0 | 10.0 | 4.0 | 11.642 | O | 1 |
| 8393 | 4.0 | 82.0 | 10.0 | 4.0 | 11.224 | O | 1 |
| 8394 | 3.0 | 83.0 | 10.0 | 4.0 | 10.806 | O | 1 |
| 8395 | 2.0 | 84.0 | 10.0 | 4.0 | 10.388 | O | 1 |
| 8396 | 1.0 | 85.0 | 10.0 | 4.0 | 9.970 | O | 1 |
| 8397 | 0.0 | 86.0 | 10.0 | 4.0 | 9.553 | O | 1 |
| 8398 | 25.0 | 56.0 | 15.0 | 4.0 | 19.148 | X | 1 |
| 8399 | 24.6 | 56.4 | 15.0 | 4.0 | 19.005 | X | 1 |
| 8400 | 24.5 | 56.5 | 15.0 | 4.0 | 18.969 | O | 1 |
| 8401 | 24.0 | 57.0 | 15.0 | 4.0 | 18.791 | O | 1 |
| 8402 | 20.0 | 61.0 | 15.0 | 4.0 | 17.364 | O | 1 |
| 8403 | 10.0 | 71.0 | 15.0 | 4.0 | 13.742 | O | 1 |
| 8404 | 9.0 | 72.0 | 15.0 | 4.0 | 13.324 | O | 1 |
| 8405 | 8.0 | 73.0 | 15.0 | 4.0 | 12.906 | O | 1 |

[Table 150]

| 8406 | 7.0 | 74.0 | 15.0 | 4.0 | 12.488 | O | 1 |
|------|-----|------|------|-----|--------|---|---|
| 8407 | 6.0 | 75.0 | 15.0 | 4.0 | 12.071 | O | 1 |
| 8408 | 5.0 | 76.0 | 15.0 | 4.0 | 11.653 | O | 1 |
| 8409 | 4.0 | 77.0 | 15.0 | 4.0 | 11.235 | O | 1 |
| 8410 | 3.0 | 78.0 | 15.0 | 4.0 | 10.817 | O | 1 |
| 8411 | 2.0 | 79.0 | 15.0 | 4.0 | 10.399 | O | 1 |
| 8412 | 1.0 | 80.0 | 15.0 | 4.0 | 9.981 | O | 1 |
| 8413 | 0.0 | 81.0 | 15.0 | 4.0 | 9.563 | O | 1 |
| 8414 | 25.0 | 51.0 | 20.0 | 4.0 | 19.148 | X | 1 |
| 8415 | 24.6 | 51.4 | 20.0 | 4.0 | 19.005 | X | 1 |
| 8416 | 24.5 | 51.5 | 20.0 | 4.0 | 18.970 | O | 1 |
| 8417 | 24.0 | 52.0 | 20.0 | 4.0 | 18.791 | O | 1 |
| 8418 | 20.0 | 56.0 | 20.0 | 4.0 | 17.364 | O | 1 |
| 8419 | 10.0 | 66.0 | 20.0 | 4.0 | 13.753 | O | 1 |
| 8420 | 9.0 | 67.0 | 20.0 | 4.0 | 13.335 | O | 1 |
| 8421 | 8.0 | 68.0 | 20.0 | 4.0 | 12.917 | O | 1 |
| 8422 | 7.0 | 69.0 | 20.0 | 4.0 | 12.499 | O | 1 |
| 8423 | 6.0 | 70.0 | 20.0 | 4.0 | 12.081 | O | 1 |
| 8424 | 5.0 | 71.0 | 20.0 | 4.0 | 11.663 | O | 1 |
| 8425 | 4.0 | 72.0 | 20.0 | 4.0 | 11.245 | O | 1 |
| 8426 | 3.0 | 73.0 | 20.0 | 4.0 | 10.827 | O | 1 |
| 8427 | 2.0 | 74.0 | 20.0 | 4.0 | 10.409 | O | 1 |
| 8428 | 1.0 | 75.0 | 20.0 | 4.0 | 9.991 | O | 1 |
| 8429 | 0.0 | 76.0 | 20.0 | 4.0 | 9.573 | O | 1 |
| 8430 | 25.0 | 46.0 | 25.0 | 4.0 | 19.148 | X | 1 |
| 8431 | 24.6 | 46.4 | 25.0 | 4.0 | 19.006 | X | 1 |
| 8432 | 24.5 | 46.5 | 25.0 | 4.0 | 18.970 | O | 1 |
| 8433 | 24.0 | 47.0 | 25.0 | 4.0 | 18.792 | O | 1 |
| 8434 | 20.0 | 51.0 | 25.0 | 4.0 | 17.364 | O | 1 |
| 8435 | 10.0 | 61.0 | 25.0 | 4.0 | 13.763 | O | 1 |
| 8436 | 9.0 | 62.0 | 25.0 | 4.0 | 13.345 | O | 1 |
| 8437 | 8.0 | 63.0 | 25.0 | 4.0 | 12.927 | O | 1 |
| 8438 | 7.0 | 64.0 | 25.0 | 4.0 | 12.509 | O | 1 |
| 8439 | 6.0 | 65.0 | 25.0 | 4.0 | 12.091 | O | 1 |
| 8440 | 5.0 | 66.0 | 25.0 | 4.0 | 11.673 | O | 1 |
| 8441 | 4.0 | 67.0 | 25.0 | 4.0 | 11.256 | O | 1 |
| 8442 | 3.0 | 68.0 | 25.0 | 4.0 | 10.838 | O | 1 |
| 8443 | 2.0 | 69.0 | 25.0 | 4.0 | 10.420 | O | 1 |
| 8444 | 1.0 | 70.0 | 25.0 | 4.0 | 10.002 | O | 1 |
| 8445 | 0.0 | 71.0 | 25.0 | 4.0 | 9.584 | O | 1 |
| 8446 | 25.0 | 41.0 | 30.0 | 4.0 | 19.149 | X | 1 |
| 8447 | 24.6 | 41.4 | 30.0 | 4.0 | 19.006 | X | 1 |
| 8448 | 24.5 | 41.5 | 30.0 | 4.0 | 18.970 | O | 1 |
| 8449 | 24.0 | 42.0 | 30.0 | 4.0 | 18.792 | O | 1 |
| 8450 | 20.0 | 46.0 | 30.0 | 4.0 | 17.365 | O | 1 |
| 8451 | 10.0 | 56.0 | 30.0 | 4.0 | 13.774 | O | 1 |
| 8452 | 9.0 | 57.0 | 30.0 | 4.0 | 13.356 | O | 1 |
| 8453 | 8.0 | 58.0 | 30.0 | 4.0 | 12.938 | O | 1 |
| 8454 | 7.0 | 59.0 | 30.0 | 4.0 | 12.520 | O | 1 |
| 8455 | 6.0 | 60.0 | 30.0 | 4.0 | 12.102 | O | 1 |

[Table 151]

| 8456 | 5.0 | 61.0 | 30.0 | 4.0 | 11.684 | O | 1 |
|---|---|---|---|---|---|---|---|
| 8457 | 4.0 | 62.0 | 30.0 | 4.0 | 11.266 | O | 1 |
| 8458 | 3.0 | 63.0 | 30.0 | 4.0 | 10.848 | O | 1 |
| 8459 | 2.0 | 64.0 | 30.0 | 4.0 | 10.430 | O | 1 |
| 8460 | 1.0 | 65.0 | 30.0 | 4.0 | 10.012 | O | 1 |
| 8461 | 0.0 | 66.0 | 30.0 | 4.0 | 9.594 | O | 1 |
| 8462 | 25.0 | 36.0 | 35.0 | 4.0 | 19.149 | X | 1 |
| 8463 | 24.6 | 36.4 | 35.0 | 4.0 | 19.006 | X | 1 |
| 8464 | 24.5 | 36.5 | 35.0 | 4.0 | 18.971 | O | 1 |
| 8465 | 24.0 | 37.0 | 35.0 | 4.0 | 18.792 | O | 1 |
| 8466 | 20.0 | 41.0 | 35.0 | 4.0 | 17.365 | O | 1 |
| 8467 | 10.0 | 51.0 | 35.0 | 4.0 | 13.784 | O | 1 |
| 8468 | 9.0 | 52.0 | 35.0 | 4.0 | 13.366 | O | 1 |
| 8469 | 8.0 | 53.0 | 35.0 | 4.0 | 12.948 | O | 1 |
| 8470 | 7.0 | 54.0 | 35.0 | 4.0 | 12.530 | O | 1 |
| 8471 | 6.0 | 55.0 | 35.0 | 4.0 | 12.112 | O | 1 |
| 8472 | 5.0 | 56.0 | 35.0 | 4.0 | 11.694 | O | 1 |
| 8473 | 4.0 | 57.0 | 35.0 | 4.0 | 11.276 | O | 1 |
| 8474 | 3.0 | 58.0 | 35.0 | 4.0 | 10.859 | O | 1 |
| 8475 | 2.0 | 59.0 | 35.0 | 4.0 | 10.441 | O | 1 |
| 8476 | 1.0 | 60.0 | 35.0 | 4.0 | 10.023 | O | 1 |
| 8477 | 0.0 | 61.0 | 35.0 | 4.0 | 9.605 | O | 1 |
| 8478 | 25.0 | 31.0 | 40.0 | 4.0 | 19.149 | X | 1 |
| 8479 | 24.6 | 31.4 | 40.0 | 4.0 | 19.007 | X | 1 |
| 8480 | 24.5 | 31.5 | 40.0 | 4.0 | 18.971 | O | 1 |
| 8481 | 24.0 | 32.0 | 40.0 | 4.0 | 18.792 | O | 1 |
| 8482 | 20.0 | 36.0 | 40.0 | 4.0 | 17.365 | O | 1 |
| 8483 | 10.0 | 46.0 | 40.0 | 4.0 | 13.794 | O | 1 |
| 8484 | 9.0 | 47.0 | 40.0 | 4.0 | 13.377 | O | 1 |
| 8485 | 8.0 | 48.0 | 40.0 | 4.0 | 12.959 | O | 1 |
| 8486 | 7.0 | 49.0 | 40.0 | 4.0 | 12.541 | O | 1 |
| 8487 | 6.0 | 50.0 | 40.0 | 4.0 | 12.123 | O | 1 |
| 8488 | 5.0 | 51.0 | 40.0 | 4.0 | 11.705 | O | 1 |
| 8489 | 4.0 | 52.0 | 40.0 | 4.0 | 11.287 | O | 1 |
| 8490 | 3.0 | 53.0 | 40.0 | 4.0 | 10.869 | O | 1 |
| 8491 | 2.0 | 54.0 | 40.0 | 4.0 | 10.451 | O | 1 |
| 8492 | 1.0 | 55.0 | 40.0 | 4.0 | 10.033 | O | 1 |
| 8493 | 0.0 | 56.0 | 40.0 | 4.0 | 9.615 | O | 1 |
| 8494 | 25.0 | 26.0 | 45.0 | 4.0 | 19.150 | X | 1 |
| 8495 | 24.6 | 26.4 | 45.0 | 4.0 | 19.007 | X | 1 |
| 8496 | 24.5 | 26.5 | 45.0 | 4.0 | 18.971 | O | 1 |
| 8497 | 24.0 | 27.0 | 45.0 | 4.0 | 18.793 | O | 1 |
| 8498 | 20.0 | 31.0 | 45.0 | 4.0 | 17.366 | O | 1 |
| 8499 | 10.0 | 41.0 | 45.0 | 4.0 | 13.797 | O | 1 |
| 8500 | 9.0 | 42.0 | 45.0 | 4.0 | 13.387 | O | 1 |
| 8501 | 8.0 | 43.0 | 45.0 | 4.0 | 12.969 | O | 1 |
| 8502 | 7.0 | 44.0 | 45.0 | 4.0 | 12.551 | O | 1 |
| 8503 | 6.0 | 45.0 | 45.0 | 4.0 | 12.133 | O | 1 |
| 8504 | 5.0 | 46.0 | 45.0 | 4.0 | 11.715 | O | 1 |
| 8505 | 4.0 | 47.0 | 45.0 | 4.0 | 11.297 | O | 1 |

[Table 152]

| 8506 | 3.0 | 48.0 | 45.0 | 4.0 | 10.879 | O | 1 |
| 8507 | 2.0 | 49.0 | 45.0 | 4.0 | 10.462 | O | 1 |
| 8508 | 1.0 | 50.0 | 45.0 | 4.0 | 10.044 | O | 1 |
| 8509 | 0.0 | 51.0 | 45.0 | 4.0 | 9.626 | O | 1 |
| 8510 | 25.0 | 21.0 | 50.0 | 4.0 | 19.150 | X | 1 |
| 8511 | 24.6 | 21.4 | 50.0 | 4.0 | 19.007 | X | 1 |
| 8512 | 24.5 | 21.5 | 50.0 | 4.0 | 18.971 | O | 1 |
| 8513 | 24.0 | 22.0 | 50.0 | 4.0 | 18.793 | O | 1 |
| 8514 | 20.0 | 26.0 | 50.0 | 4.0 | 17.366 | O | 1 |
| 8515 | 10.0 | 36.0 | 50.0 | 4.0 | 13.798 | O | 1 |
| 8516 | 9.0 | 37.0 | 50.0 | 4.0 | 13.397 | O | 1 |
| 8517 | 8.0 | 38.0 | 50.0 | 4.0 | 12.980 | O | 1 |
| 8518 | 7.0 | 39.0 | 50.0 | 4.0 | 12.562 | O | 1 |
| 8519 | 6.0 | 40.0 | 50.0 | 4.0 | 12.144 | O | 1 |
| 8520 | 5.0 | 41.0 | 50.0 | 4.0 | 11.726 | O | 1 |
| 8521 | 4.0 | 42.0 | 50.0 | 4.0 | 11.308 | O | 1 |
| 8522 | 3.0 | 43.0 | 50.0 | 4.0 | 10.890 | O | 1 |
| 8523 | 2.0 | 44.0 | 50.0 | 4.0 | 10.472 | O | 1 |
| 8524 | 1.0 | 45.0 | 50.0 | 4.0 | 10.054 | O | 1 |
| 8525 | 0.0 | 46.0 | 50.0 | 4.0 | 9.636 | O | 1 |
| 8526 | 25.0 | 16.0 | 55.0 | 4.0 | 19.150 | X | 1 |
| 8527 | 24.6 | 16.4 | 55.0 | 4.0 | 19.007 | X | 1 |
| 8528 | 24.5 | 16.5 | 55.0 | 4.0 | 18.972 | O | 1 |
| 8529 | 24.0 | 17.0 | 55.0 | 4.0 | 18.793 | O | 1 |
| 8530 | 20.0 | 21.0 | 55.0 | 4.0 | 17.366 | O | 1 |
| 8531 | 10.0 | 31.0 | 55.0 | 4.0 | 13.798 | O | 1 |
| 8532 | 9.0 | 32.0 | 55.0 | 4.0 | 13.408 | O | 1 |
| 8533 | 8.0 | 33.0 | 55.0 | 4.0 | 12.990 | O | 1 |
| 8534 | 7.0 | 34.0 | 55.0 | 4.0 | 12.572 | O | 1 |
| 8535 | 6.0 | 35.0 | 55.0 | 4.0 | 12.154 | O | 1 |
| 8536 | 5.0 | 36.0 | 55.0 | 4.0 | 11.736 | O | 1 |
| 8537 | 4.0 | 37.0 | 55.0 | 4.0 | 11.318 | O | 1 |
| 8538 | 3.0 | 38.0 | 55.0 | 4.0 | 10.900 | O | 1 |
| 8539 | 2.0 | 39.0 | 55.0 | 4.0 | 10.482 | O | 1 |
| 8540 | 1.0 | 40.0 | 55.0 | 4.0 | 10.065 | O | 1 |
| 8541 | 0.0 | 41.0 | 55.0 | 4.0 | 9.647 | O | 1 |
| 8542 | 25.0 | 11.0 | 60.0 | 4.0 | 19.150 | X | 1 |
| 8543 | 24.6 | 11.4 | 60.0 | 4.0 | 19.008 | X | 1 |
| 8544 | 24.5 | 11.5 | 60.0 | 4.0 | 18.972 | O | 1 |
| 8545 | 24.0 | 12.0 | 60.0 | 4.0 | 18.794 | O | 1 |
| 8546 | 20.0 | 16.0 | 60.0 | 4.0 | 17.366 | O | 1 |
| 8547 | 10.0 | 26.0 | 60.0 | 4.0 | 13.798 | O | 1 |
| 8548 | 9.0 | 27.0 | 60.0 | 4.0 | 13.418 | O | 1 |
| 8549 | 8.0 | 28.0 | 60.0 | 4.0 | 13.000 | O | 1 |
| 8550 | 7.0 | 29.0 | 60.0 | 4.0 | 12.582 | O | 1 |
| 8551 | 6.0 | 30.0 | 60.0 | 4.0 | 12.165 | O | 1 |
| 8552 | 5.0 | 31.0 | 60.0 | 4.0 | 11.747 | O | 1 |
| 8553 | 4.0 | 32.0 | 60.0 | 4.0 | 11.329 | O | 1 |
| 8554 | 3.0 | 33.0 | 60.0 | 4.0 | 10.911 | O | 1 |
| 8555 | 2.0 | 34.0 | 60.0 | 4.0 | 10.493 | O | 1 |

[Table 153]

| 8556 | 1.0 | 35.0 | 60.0 | 4.0 | 10.075 | O | 1 |
|------|------|------|------|-----|--------|---|---|
| 8557 | 0.0 | 36.0 | 60.0 | 4.0 | 9.657 | O | 1 |
| 8558 | 25.0 | 6.0 | 65.0 | 4.0 | 19.151 | X | 1 |
| 8559 | 24.6 | 6.4 | 65.0 | 4.0 | 19.008 | X | 1 |
| 8560 | 24.5 | 6.5 | 65.0 | 4.0 | 18.972 | O | 1 |
| 8561 | 24.0 | 7.0 | 65.0 | 4.0 | 18.794 | O | 1 |
| 8562 | 20.0 | 11.0 | 65.0 | 4.0 | 17.367 | O | 1 |
| 8563 | 10.0 | 21.0 | 65.0 | 4.0 | 13.799 | O | 1 |
| 8564 | 9.0 | 22.0 | 65.0 | 4.0 | 13.429 | O | 1 |
| 8565 | 8.0 | 23.0 | 65.0 | 4.0 | 13.011 | O | 1 |
| 8566 | 7.0 | 24.0 | 65.0 | 4.0 | 12.593 | O | 1 |
| 8567 | 6.0 | 25.0 | 65.0 | 4.0 | 12.175 | O | 1 |
| 8568 | 5.0 | 26.0 | 65.0 | 4.0 | 11.757 | O | 1 |
| 8569 | 4.0 | 27.0 | 65.0 | 4.0 | 11.339 | O | 1 |
| 8570 | 3.0 | 28.0 | 65.0 | 4.0 | 10.921 | O | 1 |
| 8571 | 2.0 | 29.0 | 65.0 | 4.0 | 10.503 | O | 1 |
| 8572 | 1.0 | 30.0 | 65.0 | 4.0 | 10.085 | O | 1 |
| 8573 | 0.0 | 31.0 | 65.0 | 4.0 | 9.668 | O | 1 |
| 8574 | 25.0 | 1.0 | 70.0 | 4.0 | 19.151 | X | 1 |
| 8575 | 24.6 | 1.4 | 70.0 | 4.0 | 19.008 | X | 1 |
| 8576 | 24.5 | 1.5 | 70.0 | 4.0 | 18.973 | O | 1 |
| 8577 | 24.0 | 2.0 | 70.0 | 4.0 | 18.794 | O | 1 |
| 8578 | 20.0 | 6.0 | 70.0 | 4.0 | 17.367 | O | 1 |
| 8579 | 10.0 | 16.0 | 70.0 | 4.0 | 13.799 | O | 1 |
| 8580 | 9.0 | 17.0 | 70.0 | 4.0 | 13.439 | O | 1 |
| 8581 | 8.0 | 18.0 | 70.0 | 4.0 | 13.021 | O | 1 |
| 8582 | 7.0 | 19.0 | 70.0 | 4.0 | 12.603 | O | 1 |
| 8583 | 6.0 | 20.0 | 70.0 | 4.0 | 12.185 | O | 1 |
| 8584 | 5.0 | 21.0 | 70.0 | 4.0 | 11.768 | O | 1 |
| 8585 | 4.0 | 22.0 | 70.0 | 4.0 | 11.350 | O | 1 |
| 8586 | 3.0 | 23.0 | 70.0 | 4.0 | 10.932 | O | 1 |
| 8587 | 2.0 | 24.0 | 70.0 | 4.0 | 10.514 | O | 1 |
| 8588 | 1.0 | 25.0 | 70.0 | 4.0 | 10.096 | O | 1 |
| 8589 | 0.0 | 26.0 | 70.0 | 4.0 | 9.678 | O | 1 |
| 8590 | 26.0 | 63.0 | 5.0 | 6.0 | 19.291 | X | 1 |
| 8591 | 25.2 | 63.8 | 5.0 | 6.0 | 19.006 | X | 1 |
| 8592 | 25.1 | 63.9 | 5.0 | 6.0 | 18.970 | O | 1 |
| 8593 | 25.0 | 64.0 | 5.0 | 6.0 | 18.934 | O | 1 |
| 8594 | 20.0 | 69.0 | 5.0 | 6.0 | 17.150 | O | 1 |
| 8595 | 10.0 | 79.0 | 5.0 | 6.0 | 13.523 | O | 1 |
| 8596 | 9.0 | 80.0 | 5.0 | 6.0 | 13.105 | O | 1 |
| 8597 | 8.0 | 81.0 | 5.0 | 6.0 | 12.687 | O | 1 |
| 8598 | 7.0 | 82.0 | 5.0 | 6.0 | 12.269 | O | 1 |
| 8599 | 6.0 | 83.0 | 5.0 | 6.0 | 11.851 | O | 1 |
| 8600 | 5.0 | 84.0 | 5.0 | 6.0 | 11.433 | O | 1 |
| 8601 | 4.0 | 85.0 | 5.0 | 6.0 | 11.015 | O | 1 |
| 8602 | 3.0 | 86.0 | 5.0 | 6.0 | 10.597 | O | 1 |
| 8603 | 2.0 | 87.0 | 5.0 | 6.0 | 10.179 | O | 1 |
| 8604 | 1.0 | 88.0 | 5.0 | 6.0 | 9.761 | O | 1 |
| 8605 | 0.0 | 89.0 | 5.0 | 6.0 | 9.344 | O | 1 |

[Table 154]

171

| 8606 | 26.0 | 58.0 | 10.0 | 6.0 | 19.291 | X | 1 |
|---|---|---|---|---|---|---|---|
| 8607 | 25.2 | 58.8 | 10.0 | 6.0 | 19.006 | X | 1 |
| 8608 | 25.1 | 58.9 | 10.0 | 6.0 | 18.970 | O | 1 |
| 8609 | 25.0 | 59.0 | 10.0 | 6.0 | 18.934 | O | 1 |
| 8610 | 20.0 | 64.0 | 10.0 | 6.0 | 17.150 | O | 1 |
| 8611 | 10.0 | 74.0 | 10.0 | 6.0 | 13.533 | O | 1 |
| 8612 | 9.0 | 75.0 | 10.0 | 6.0 | 13.115 | O | 1 |
| 8613 | 8.0 | 76.0 | 10.0 | 6.0 | 12.697 | O | 1 |
| 8614 | 7.0 | 77.0 | 10.0 | 6.0 | 12.279 | O | 1 |
| 8615 | 6.0 | 78.0 | 10.0 | 6.0 | 11.861 | O | 1 |
| 8616 | 5.0 | 79.0 | 10.0 | 6.0 | 11.444 | O | 1 |
| 8617 | 4.0 | 80.0 | 10.0 | 6.0 | 11.026 | O | 1 |
| 8618 | 3.0 | 81.0 | 10.0 | 6.0 | 10.608 | O | 1 |
| 8619 | 2.0 | 82.0 | 10.0 | 6.0 | 10.190 | O | 1 |
| 8620 | 1.0 | 83.0 | 10.0 | 6.0 | 9.772 | O | 1 |
| 8621 | 0.0 | 84.0 | 10.0 | 6.0 | 9.354 | O | 1 |
| 8622 | 26.0 | 53.0 | 15.0 | 6.0 | 19.292 | X | 1 |
| 8623 | 25.2 | 53.8 | 15.0 | 6.0 | 19.006 | X | 1 |
| 8624 | 25.1 | 53.9 | 15.0 | 6.0 | 18.970 | O | 1 |
| 8625 | 25.0 | 54.0 | 15.0 | 6.0 | 18.935 | O | 1 |
| 8626 | 20.0 | 59.0 | 15.0 | 6.0 | 17.151 | O | 1 |
| 8627 | 10.0 | 69.0 | 15.0 | 6.0 | 13.544 | O | 1 |
| 8628 | 9.0 | 70.0 | 15.0 | 6.0 | 13.126 | O | 1 |
| 8629 | 8.0 | 71.0 | 15.0 | 6.0 | 12.708 | O | 1 |
| 8630 | 7.0 | 72.0 | 15.0 | 6.0 | 12.290 | O | 1 |
| 8631 | 6.0 | 73.0 | 15.0 | 6.0 | 11.872 | O | 1 |
| 8632 | 5.0 | 74.0 | 15.0 | 6.0 | 11.454 | O | 1 |
| 8633 | 4.0 | 75.0 | 15.0 | 6.0 | 11.036 | O | 1 |
| 8634 | 3.0 | 76.0 | 15.0 | 6.0 | 10.618 | O | 1 |
| 8635 | 2.0 | 77.0 | 15.0 | 6.0 | 10.200 | O | 1 |
| 8636 | 1.0 | 78.0 | 15.0 | 6.0 | 9.782 | O | 1 |
| 8637 | 0.0 | 79.0 | 15.0 | 6.0 | 9.364 | O | 1 |
| 8638 | 26.0 | 48.0 | 20.0 | 6.0 | 19.292 | X | 1 |
| 8639 | 25.2 | 48.8 | 20.0 | 6.0 | 19.006 | X | 1 |
| 8640 | 25.1 | 48.9 | 20.0 | 6.0 | 18.971 | O | 1 |
| 8641 | 25.0 | 49.0 | 20.0 | 6.0 | 18.935 | O | 1 |
| 8642 | 20.0 | 54.0 | 20.0 | 6.0 | 17.151 | O | 1 |
| 8643 | 10.0 | 64.0 | 20.0 | 6.0 | 13.554 | O | 1 |
| 8644 | 9.0 | 65.0 | 20.0 | 6.0 | 13.136 | O | 1 |
| 8645 | 8.0 | 66.0 | 20.0 | 6.0 | 12.718 | O | 1 |
| 8646 | 7.0 | 67.0 | 20.0 | 6.0 | 12.300 | O | 1 |
| 8647 | 6.0 | 68.0 | 20.0 | 6.0 | 11.882 | O | 1 |
| 8648 | 5.0 | 69.0 | 20.0 | 6.0 | 11.464 | O | 1 |
| 8649 | 4.0 | 70.0 | 20.0 | 6.0 | 11.047 | O | 1 |
| 8650 | 3.0 | 71.0 | 20.0 | 6.0 | 10.629 | O | 1 |
| 8651 | 2.0 | 72.0 | 20.0 | 6.0 | 10.211 | O | 1 |
| 8652 | 1.0 | 73.0 | 20.0 | 6.0 | 9.793 | O | 1 |
| 8653 | 0.0 | 74.0 | 20.0 | 6.0 | 9.375 | O | 1 |
| 8654 | 26.0 | 43.0 | 25.0 | 6.0 | 19.292 | X | 1 |
| 8655 | 25.2 | 43.8 | 25.0 | 6.0 | 19.007 | X | 1 |

[Table 155]

| | | | | | | | |
|---|---|---|---|---|---|---|---|
| 8656 | 25.1 | 43.9 | 25.0 | 6.0 | 18.971 | O | 1 |
| 8657 | 25.0 | 44.0 | 25.0 | 6.0 | 18.935 | O | 1 |
| 8658 | 20.0 | 49.0 | 25.0 | 6.0 | 17.151 | O | 1 |
| 8659 | 10.0 | 59.0 | 25.0 | 6.0 | 13.565 | O | 1 |
| 8660 | 9.0 | 60.0 | 25.0 | 6.0 | 13.147 | O | 1 |
| 8661 | 8.0 | 61.0 | 25.0 | 6.0 | 12.729 | O | 1 |
| 8662 | 7.0 | 62.0 | 25.0 | 6.0 | 12.311 | O | 1 |
| 8663 | 6.0 | 63.0 | 25.0 | 6.0 | 11.893 | O | 1 |
| 8664 | 5.0 | 64.0 | 25.0 | 6.0 | 11.475 | O | 1 |
| 8665 | 4.0 | 65.0 | 25.0 | 6.0 | 11.057 | O | 1 |
| 8666 | 3.0 | 66.0 | 25.0 | 6.0 | 10.639 | O | 1 |
| 8667 | 2.0 | 67.0 | 25.0 | 6.0 | 10.221 | O | 1 |
| 8668 | 1.0 | 68.0 | 25.0 | 6.0 | 9.803 | O | 1 |
| 8669 | 0.0 | 69.0 | 25.0 | 6.0 | 9.385 | O | 1 |
| 8670 | 26.0 | 38.0 | 30.0 | 6.0 | 19.292 | X | 1 |
| 8671 | 25.2 | 38.8 | 30.0 | 6.0 | 19.007 | X | 1 |
| 8672 | 25.1 | 38.9 | 30.0 | 6.0 | 18.971 | O | 1 |
| 8673 | 25.0 | 39.0 | 30.0 | 6.0 | 18.936 | O | 1 |
| 8674 | 20.0 | 44.0 | 30.0 | 6.0 | 17.152 | O | 1 |
| 8675 | 10.0 | 54.0 | 30.0 | 6.0 | 13.575 | O | 1 |
| 8676 | 9.0 | 55.0 | 30.0 | 6.0 | 13.157 | O | 1 |
| 8677 | 8.0 | 56.0 | 30.0 | 6.0 | 12.739 | O | 1 |
| 8678 | 7.0 | 57.0 | 30.0 | 6.0 | 12.321 | O | 1 |
| 8679 | 6.0 | 58.0 | 30.0 | 6.0 | 11.903 | O | 1 |
| 8680 | 5.0 | 59.0 | 30.0 | 6.0 | 11.485 | O | 1 |
| 8681 | 4.0 | 60.0 | 30.0 | 6.0 | 11.067 | O | 1 |
| 8682 | 3.0 | 61.0 | 30.0 | 6.0 | 10.650 | O | 1 |
| 8683 | 2.0 | 62.0 | 30.0 | 6.0 | 10.232 | O | 1 |
| 8684 | 1.0 | 63.0 | 30.0 | 6.0 | 9.814 | O | 1 |
| 8685 | 0.0 | 64.0 | 30.0 | 6.0 | 9.396 | O | 1 |
| 8686 | 26.0 | 33.0 | 35.0 | 6.0 | 19.293 | X | 1 |
| 8687 | 25.2 | 33.8 | 35.0 | 6.0 | 19.007 | X | 1 |
| 8688 | 25.1 | 33.9 | 35.0 | 6.0 | 18.972 | O | 1 |
| 8689 | 25.0 | 34.0 | 35.0 | 6.0 | 18.936 | O | 1 |
| 8690 | 20.0 | 39.0 | 35.0 | 6.0 | 17.152 | O | 1 |
| 8691 | 10.0 | 49.0 | 35.0 | 6.0 | 13.584 | O | 1 |
| 8692 | 9.0 | 50.0 | 35.0 | 6.0 | 13.167 | O | 1 |
| 8693 | 8.0 | 51.0 | 35.0 | 6.0 | 12.750 | O | 1 |
| 8694 | 7.0 | 52.0 | 35.0 | 6.0 | 12.332 | O | 1 |
| 8695 | 6.0 | 53.0 | 35.0 | 6.0 | 11.914 | O | 1 |
| 8696 | 5.0 | 54.0 | 35.0 | 6.0 | 11.496 | O | 1 |
| 8697 | 4.0 | 55.0 | 35.0 | 6.0 | 11.078 | O | 1 |
| 8698 | 3.0 | 56.0 | 35.0 | 6.0 | 10.660 | O | 1 |
| 8699 | 2.0 | 57.0 | 35.0 | 6.0 | 10.242 | O | 1 |
| 8700 | 1.0 | 58.0 | 35.0 | 6.0 | 9.824 | O | 1 |
| 8701 | 0.0 | 59.0 | 35.0 | 6.0 | 9.406 | O | 1 |
| 8702 | 26.0 | 28.0 | 40.0 | 6.0 | 19.293 | X | 1 |
| 8703 | 25.2 | 28.8 | 40.0 | 6.0 | 19.008 | X | 1 |
| 8704 | 25.1 | 28.9 | 40.0 | 6.0 | 18.972 | O | 1 |
| 8705 | 25.0 | 29.0 | 40.0 | 6.0 | 18.936 | O | 1 |

[Table 156]

| 8706 | 20.0 | 34.0 | 40.0 | 6.0 | 17.152 | O | 1 |
|---|---|---|---|---|---|---|---|
| 8707 | 10.0 | 44.0 | 40.0 | 6.0 | 13.584 | O | 1 |
| 8708 | 9.0 | 45.0 | 40.0 | 6.0 | 13.178 | O | 1 |
| 8709 | 8.0 | 46.0 | 40.0 | 6.0 | 12.760 | O | 1 |
| 8710 | 7.0 | 47.0 | 40.0 | 6.0 | 12.342 | O | 1 |
| 8711 | 6.0 | 48.0 | 40.0 | 6.0 | 11.924 | O | 1 |
| 8712 | 5.0 | 49.0 | 40.0 | 6.0 | 11.506 | O | 1 |
| 8713 | 4.0 | 50.0 | 40.0 | 6.0 | 11.088 | O | 1 |
| 8714 | 3.0 | 51.0 | 40.0 | 6.0 | 10.670 | O | 1 |
| 8715 | 2.0 | 52.0 | 40.0 | 6.0 | 10.253 | O | 1 |
| 8716 | 1.0 | 53.0 | 40.0 | 6.0 | 9.835 | O | 1 |
| 8717 | 0.0 | 54.0 | 40.0 | 6.0 | 9.417 | O | 1 |
| 8718 | 26.0 | 23.0 | 45.0 | 6.0 | 19.293 | X | 1 |
| 8719 | 25.2 | 23.8 | 45.0 | 6.0 | 19.008 | X | 1 |
| 8720 | 25.1 | 23.9 | 45.0 | 6.0 | 18.972 | O | 1 |
| 8721 | 25.0 | 24.0 | 45.0 | 6.0 | 18.937 | O | 1 |
| 8722 | 20.0 | 29.0 | 45.0 | 6.0 | 17.152 | O | 1 |
| 8723 | 10.0 | 39.0 | 45.0 | 6.0 | 13.584 | O | 1 |
| 8724 | 9.0 | 40.0 | 45.0 | 6.0 | 13.188 | O | 1 |
| 8725 | 8.0 | 41.0 | 45.0 | 6.0 | 12.770 | O | 1 |
| 8726 | 7.0 | 42.0 | 45.0 | 6.0 | 12.353 | O | 1 |
| 8727 | 6.0 | 43.0 | 45.0 | 6.0 | 11.935 | O | 1 |
| 8728 | 5.0 | 44.0 | 45.0 | 6.0 | 11.517 | O | 1 |
| 8729 | 4.0 | 45.0 | 45.0 | 6.0 | 11.099 | O | 1 |
| 8730 | 3.0 | 46.0 | 45.0 | 6.0 | 10.681 | O | 1 |
| 8731 | 2.0 | 47.0 | 45.0 | 6.0 | 10.263 | O | 1 |
| 8732 | 1.0 | 48.0 | 45.0 | 6.0 | 9.845 | O | 1 |
| 8733 | 0.0 | 49.0 | 45.0 | 6.0 | 9.427 | O | 1 |
| 8734 | 26.0 | 18.0 | 50.0 | 6.0 | 19.294 | X | 1 |
| 8735 | 25.2 | 18.8 | 50.0 | 6.0 | 19.008 | X | 1 |
| 8736 | 25.1 | 18.9 | 50.0 | 6.0 | 18.973 | O | 1 |
| 8737 | 25.0 | 19.0 | 50.0 | 6.0 | 18.937 | O | 1 |
| 8738 | 20.0 | 24.0 | 50.0 | 6.0 | 17.153 | O | 1 |
| 8739 | 10.0 | 34.0 | 50.0 | 6.0 | 13.585 | O | 1 |
| 8740 | 9.0 | 35.0 | 50.0 | 6.0 | 13.199 | O | 1 |
| 8741 | 8.0 | 36.0 | 50.0 | 6.0 | 12.781 | O | 1 |
| 8742 | 7.0 | 37.0 | 50.0 | 6.0 | 12.363 | O | 1 |
| 8743 | 6.0 | 38.0 | 50.0 | 6.0 | 11.945 | O | 1 |
| 8744 | 5.0 | 39.0 | 50.0 | 6.0 | 11.527 | O | 1 |
| 8745 | 4.0 | 40.0 | 50.0 | 6.0 | 11.109 | O | 1 |
| 8746 | 3.0 | 41.0 | 50.0 | 6.0 | 10.691 | O | 1 |
| 8747 | 2.0 | 42.0 | 50.0 | 6.0 | 10.273 | O | 1 |
| 8748 | 1.0 | 43.0 | 50.0 | 6.0 | 9.856 | O | 1 |
| 8749 | 0.0 | 44.0 | 50.0 | 6.0 | 9.438 | O | 1 |
| 8750 | 26.0 | 13.0 | 55.0 | 6.0 | 19.294 | X | 1 |
| 8751 | 25.2 | 13.8 | 55.0 | 6.0 | 19.008 | X | 1 |
| 8752 | 25.1 | 13.9 | 55.0 | 6.0 | 18.973 | O | 1 |
| 8753 | 25.0 | 14.0 | 55.0 | 6.0 | 18.937 | O | 1 |
| 8754 | 20.0 | 19.0 | 55.0 | 6.0 | 17.153 | O | 1 |
| 8755 | 10.0 | 29.0 | 55.0 | 6.0 | 13.585 | O | 1 |

[Table 157]

| 8756 | 9.0 | 30.0 | 55.0 | 6.0 | 13.209 | O | 1 |
| 8757 | 8.0 | 31.0 | 55.0 | 6.0 | 12.791 | O | 1 |
| 8758 | 7.0 | 32.0 | 55.0 | 6.0 | 12.373 | O | 1 |
| 8759 | 6.0 | 33.0 | 55.0 | 6.0 | 11.956 | O | 1 |
| 8760 | 5.0 | 34.0 | 55.0 | 6.0 | 11.538 | O | 1 |
| 8761 | 4.0 | 35.0 | 55.0 | 6.0 | 11.120 | O | 1 |
| 8762 | 3.0 | 36.0 | 55.0 | 6.0 | 10.702 | O | 1 |
| 8763 | 2.0 | 37.0 | 55.0 | 6.0 | 10.284 | O | 1 |
| 8764 | 1.0 | 38.0 | 55.0 | 6.0 | 9.866 | O | 1 |
| 8765 | 0.0 | 39.0 | 55.0 | 6.0 | 9.448 | O | 1 |
| 8766 | 26.0 | 8.0 | 60.0 | 6.0 | 19.294 | X | 1 |
| 8767 | 25.2 | 8.8 | 60.0 | 6.0 | 19.009 | X | 1 |
| 8768 | 25.1 | 8.9 | 60.0 | 6.0 | 18.973 | O | 1 |
| 8769 | 25.0 | 9.0 | 60.0 | 6.0 | 18.937 | O | 1 |
| 8770 | 20.0 | 14.0 | 60.0 | 6.0 | 17.153 | O | 1 |
| 8771 | 10.0 | 24.0 | 60.0 | 6.0 | 13.585 | O | 1 |
| 8772 | 9.0 | 25.0 | 60.0 | 6.0 | 13.220 | O | 1 |
| 8773 | 8.0 | 26.0 | 60.0 | 6.0 | 12.802 | O | 1 |
| 8774 | 7.0 | 27.0 | 60.0 | 6.0 | 12.384 | O | 1 |
| 8775 | 6.0 | 28.0 | 60.0 | 6.0 | 11.966 | O | 1 |
| 8776 | 5.0 | 29.0 | 60.0 | 6.0 | 11.548 | O | 1 |
| 8777 | 4.0 | 30.0 | 60.0 | 6.0 | 11.130 | O | 1 |
| 8778 | 3.0 | 31.0 | 60.0 | 6.0 | 10.712 | O | 1 |
| 8779 | 2.0 | 32.0 | 60.0 | 6.0 | 10.294 | O | 1 |
| 8780 | 1.0 | 33.0 | 60.0 | 6.0 | 9.876 | O | 1 |
| 8781 | 0.0 | 34.0 | 60.0 | 6.0 | 9.459 | O | 1 |
| 8782 | 26.0 | 3.0 | 65.0 | 6.0 | 19.295 | X | 1 |
| 8783 | 25.2 | 3.8 | 65.0 | 6.0 | 19.009 | X | 1 |
| 8784 | 25.1 | 3.9 | 65.0 | 6.0 | 18.973 | O | 1 |
| 8785 | 25.0 | 4.0 | 65.0 | 6.0 | 18.938 | O | 1 |
| 8786 | 20.0 | 9.0 | 65.0 | 6.0 | 17.154 | O | 1 |
| 8787 | 10.0 | 19.0 | 65.0 | 6.0 | 13.585 | O | 1 |
| 8788 | 9.0 | 20.0 | 65.0 | 6.0 | 13.229 | O | 1 |
| 8789 | 8.0 | 21.0 | 65.0 | 6.0 | 12.812 | O | 1 |
| 8790 | 7.0 | 22.0 | 65.0 | 6.0 | 12.394 | O | 1 |
| 8791 | 6.0 | 23.0 | 65.0 | 6.0 | 11.976 | O | 1 |
| 8792 | 5.0 | 24.0 | 65.0 | 6.0 | 11.559 | O | 1 |
| 8793 | 4.0 | 25.0 | 65.0 | 6.0 | 11.141 | O | 1 |
| 8794 | 3.0 | 26.0 | 65.0 | 6.0 | 10.723 | O | 1 |
| 8795 | 2.0 | 27.0 | 65.0 | 6.0 | 10.305 | O | 1 |
| 8796 | 1.0 | 28.0 | 65.0 | 6.0 | 9.887 | O | 1 |
| 8797 | 0.0 | 29.0 | 65.0 | 6.0 | 9.469 | O | 1 |
| 8798 | 26.0 | 61.0 | 5.0 | 8.0 | 19.078 | X | 1 |
| 8799 | 25.8 | 61.2 | 5.0 | 8.0 | 19.007 | X | 1 |
| 8800 | 25.7 | 61.3 | 5.0 | 8.0 | 18.971 | O | 1 |
| 8801 | 25.0 | 62.0 | 5.0 | 8.0 | 18.721 | O | 1 |
| 8802 | 20.0 | 67.0 | 5.0 | 8.0 | 16.937 | O | 1 |
| 8803 | 10.0 | 77.0 | 5.0 | 8.0 | 13.324 | O | 1 |
| 8804 | 9.0 | 78.0 | 5.0 | 8.0 | 12.906 | O | 1 |
| 8805 | 8.0 | 79.0 | 5.0 | 8.0 | 12.488 | O | 1 |

[Table 158]

| 8806 | 7.0 | 80.0 | 5.0 | 8.0 | 12.070 | O | 1 |
|------|-----|------|-----|-----|--------|---|---|
| 8807 | 6.0 | 81.0 | 5.0 | 8.0 | 11.652 | O | 1 |
| 8808 | 5.0 | 82.0 | 5.0 | 8.0 | 11.235 | O | 1 |
| 8809 | 4.0 | 83.0 | 5.0 | 8.0 | 10.817 | O | 1 |
| 8810 | 3.0 | 84.0 | 5.0 | 8.0 | 10.399 | O | 1 |
| 8811 | 2.0 | 85.0 | 5.0 | 8.0 | 9.981 | O | 1 |
| 8812 | 1.0 | 86.0 | 5.0 | 8.0 | 9.563 | O | 1 |
| 8813 | 0.0 | 87.0 | 5.0 | 8.0 | 9.145 | O | 1 |
| 8814 | 26.0 | 56.0 | 10.0 | 8.0 | 19.078 | X | 1 |
| 8815 | 25.8 | 56.2 | 10.0 | 8.0 | 19.007 | X | 1 |
| 8816 | 25.7 | 56.3 | 10.0 | 8.0 | 18.971 | O | 1 |
| 8817 | 25.0 | 57.0 | 10.0 | 8.0 | 18.721 | O | 1 |
| 8818 | 20.0 | 62.0 | 10.0 | 8.0 | 16.937 | O | 1 |
| 8819 | 10.0 | 72.0 | 10.0 | 8.0 | 13.335 | O | 1 |
| 8820 | 9.0 | 73.0 | 10.0 | 8.0 | 12.917 | O | 1 |
| 8821 | 8.0 | 74.0 | 10.0 | 8.0 | 12.499 | O | 1 |
| 8822 | 7.0 | 75.0 | 10.0 | 8.0 | 12.081 | O | 1 |
| 8823 | 6.0 | 76.0 | 10.0 | 8.0 | 11.663 | O | 1 |
| 8824 | 5.0 | 77.0 | 10.0 | 8.0 | 11.245 | O | 1 |
| 8825 | 4.0 | 78.0 | 10.0 | 8.0 | 10.827 | O | 1 |
| 8826 | 3.0 | 79.0 | 10.0 | 8.0 | 10.409 | O | 1 |
| 8827 | 2.0 | 80.0 | 10.0 | 8.0 | 9.991 | O | 1 |
| 8828 | 1.0 | 81.0 | 10.0 | 8.0 | 9.573 | O | 1 |
| 8829 | 0.0 | 82.0 | 10.0 | 8.0 | 9.155 | O | 1 |
| 8830 | 26.0 | 51.0 | 15.0 | 8.0 | 19.079 | X | 1 |
| 8831 | 25.8 | 51.2 | 15.0 | 8.0 | 19.007 | X | 1 |
| 8832 | 25.7 | 51.3 | 15.0 | 8.0 | 18.972 | O | 1 |
| 8833 | 25.0 | 52.0 | 15.0 | 8.0 | 18.722 | O | 1 |
| 8834 | 20.0 | 57.0 | 15.0 | 8.0 | 16.938 | O | 1 |
| 8835 | 10.0 | 67.0 | 15.0 | 8.0 | 13.345 | O | 1 |
| 8836 | 9.0 | 68.0 | 15.0 | 8.0 | 12.927 | O | 1 |
| 8837 | 8.0 | 69.0 | 15.0 | 8.0 | 12.509 | O | 1 |
| 8838 | 7.0 | 70.0 | 15.0 | 8.0 | 12.091 | O | 1 |
| 8839 | 6.0 | 71.0 | 15.0 | 8.0 | 11.673 | O | 1 |
| 8840 | 5.0 | 72.0 | 15.0 | 8.0 | 11.255 | O | 1 |
| 8841 | 4.0 | 73.0 | 15.0 | 8.0 | 10.838 | O | 1 |
| 8842 | 3.0 | 74.0 | 15.0 | 8.0 | 10.420 | O | 1 |
| 8843 | 2.0 | 75.0 | 15.0 | 8.0 | 10.002 | O | 1 |
| 8844 | 1.0 | 76.0 | 15.0 | 8.0 | 9.584 | O | 1 |
| 8845 | 0.0 | 77.0 | 15.0 | 8.0 | 9.166 | O | 1 |
| 8846 | 26.0 | 46.0 | 20.0 | 8.0 | 19.079 | X | 1 |
| 8847 | 25.8 | 46.2 | 20.0 | 8.0 | 19.007 | X | 1 |
| 8848 | 25.7 | 46.3 | 20.0 | 8.0 | 18.972 | O | 1 |
| 8849 | 25.0 | 47.0 | 20.0 | 8.0 | 18.722 | O | 1 |
| 8850 | 20.0 | 52.0 | 20.0 | 8.0 | 16.938 | O | 1 |
| 8851 | 10.0 | 62.0 | 20.0 | 8.0 | 13.355 | O | 1 |
| 8852 | 9.0 | 63.0 | 20.0 | 8.0 | 12.938 | O | 1 |
| 8853 | 8.0 | 64.0 | 20.0 | 8.0 | 12.520 | O | 1 |
| 8854 | 7.0 | 65.0 | 20.0 | 8.0 | 12.102 | O | 1 |
| 8855 | 6.0 | 66.0 | 20.0 | 8.0 | 11.684 | O | 1 |

[Table 159]

| | | | | | | | |
|---|---|---|---|---|---|---|---|
| 8856 | 5.0 | 67.0 | 20.0 | 8.0 | 11.266 | O | 1 |
| 8857 | 4.0 | 68.0 | 20.0 | 8.0 | 10.848 | O | 1 |
| 8858 | 3.0 | 69.0 | 20.0 | 8.0 | 10.430 | O | 1 |
| 8859 | 2.0 | 70.0 | 20.0 | 8.0 | 10.012 | O | 1 |
| 8860 | 1.0 | 71.0 | 20.0 | 8.0 | 9.594 | O | 1 |
| 8861 | 0.0 | 72.0 | 20.0 | 8.0 | 9.176 | O | 1 |
| 8862 | 26.0 | 41.0 | 25.0 | 8.0 | 19.079 | X | 1 |
| 8863 | 25.8 | 41.2 | 25.0 | 8.0 | 19.008 | X | 1 |
| 8864 | 25.7 | 41.3 | 25.0 | 8.0 | 18.972 | O | 1 |
| 8865 | 25.0 | 42.0 | 25.0 | 8.0 | 18.722 | O | 1 |
| 8866 | 20.0 | 47.0 | 25.0 | 8.0 | 16.938 | O | 1 |
| 8867 | 10.0 | 57.0 | 25.0 | 8.0 | 13.366 | O | 1 |
| 8868 | 9.0 | 58.0 | 25.0 | 8.0 | 12.948 | O | 1 |
| 8869 | 8.0 | 59.0 | 25.0 | 8.0 | 12.530 | O | 1 |
| 8870 | 7.0 | 60.0 | 25.0 | 8.0 | 12.112 | O | 1 |
| 8871 | 6.0 | 61.0 | 25.0 | 8.0 | 11.694 | O | 1 |
| 8872 | 5.0 | 62.0 | 25.0 | 8.0 | 11.276 | O | 1 |
| 8873 | 4.0 | 63.0 | 25.0 | 8.0 | 10.858 | O | 1 |
| 8874 | 3.0 | 64.0 | 25.0 | 8.0 | 10.441 | O | 1 |
| 8875 | 2.0 | 65.0 | 25.0 | 8.0 | 10.023 | O | 1 |
| 8876 | 1.0 | 66.0 | 25.0 | 8.0 | 9.605 | O | 1 |
| 8877 | 0.0 | 67.0 | 25.0 | 8.0 | 9.187 | O | 1 |
| 8878 | 26.0 | 36.0 | 30.0 | 8.0 | 19.079 | X | 1 |
| 8879 | 25.8 | 36.2 | 30.0 | 8.0 | 19.008 | X | 1 |
| 8880 | 25.7 | 36.3 | 30.0 | 8.0 | 18.972 | O | 1 |
| 8881 | 25.0 | 37.0 | 30.0 | 8.0 | 18.723 | O | 1 |
| 8882 | 20.0 | 42.0 | 30.0 | 8.0 | 16.939 | O | 1 |
| 8883 | 10.0 | 52.0 | 30.0 | 8.0 | 13.370 | O | 1 |
| 8884 | 9.0 | 53.0 | 30.0 | 8.0 | 12.958 | O | 1 |
| 8885 | 8.0 | 54.0 | 30.0 | 8.0 | 12.541 | O | 1 |
| 8886 | 7.0 | 55.0 | 30.0 | 8.0 | 12.123 | O | 1 |
| 8887 | 6.0 | 56.0 | 30.0 | 8.0 | 11.705 | O | 1 |
| 8888 | 5.0 | 57.0 | 30.0 | 8.0 | 11.287 | O | 1 |
| 8889 | 4.0 | 58.0 | 30.0 | 8.0 | 10.869 | O | 1 |
| 8890 | 3.0 | 59.0 | 30.0 | 8.0 | 10.451 | O | 1 |
| 8891 | 2.0 | 60.0 | 30.0 | 8.0 | 10.033 | O | 1 |
| 8892 | 1.0 | 61.0 | 30.0 | 8.0 | 9.615 | O | 1 |
| 8893 | 0.0 | 62.0 | 30.0 | 8.0 | 9.197 | O | 1 |
| 8894 | 26.0 | 31.0 | 35.0 | 8.0 | 19.080 | X | 1 |
| 8895 | 25.8 | 31.2 | 35.0 | 8.0 | 19.008 | X | 1 |
| 8896 | 25.7 | 31.3 | 35.0 | 8.0 | 18.973 | O | 1 |
| 8897 | 25.0 | 32.0 | 35.0 | 8.0 | 18.723 | O | 1 |
| 8898 | 20.0 | 37.0 | 35.0 | 8.0 | 16.939 | O | 1 |
| 8899 | 10.0 | 47.0 | 35.0 | 8.0 | 13.371 | O | 1 |
| 8900 | 9.0 | 48.0 | 35.0 | 8.0 | 12.969 | O | 1 |
| 8901 | 8.0 | 49.0 | 35.0 | 8.0 | 12.551 | O | 1 |
| 8902 | 7.0 | 50.0 | 35.0 | 8.0 | 12.133 | O | 1 |
| 8903 | 6.0 | 51.0 | 35.0 | 8.0 | 11.715 | O | 1 |
| 8904 | 5.0 | 52.0 | 35.0 | 8.0 | 11.297 | O | 1 |
| 8905 | 4.0 | 53.0 | 35.0 | 8.0 | 10.879 | O | 1 |

[Table 160]

| 8906 | 3.0 | 54.0 | 35.0 | 8.0 | 10.461 | O | 1 |
|------|-----|------|------|-----|--------|---|---|
| 8907 | 2.0 | 55.0 | 35.0 | 8.0 | 10.043 | O | 1 |
| 8908 | 1.0 | 56.0 | 35.0 | 8.0 | 9.626 | O | 1 |
| 8909 | 0.0 | 57.0 | 35.0 | 8.0 | 9.208 | O | 1 |
| 8910 | 26.0 | 26.0 | 40.0 | 8.0 | 19.080 | X | 1 |
| 8911 | 25.8 | 26.2 | 40.0 | 8.0 | 19.009 | X | 1 |
| 8912 | 25.7 | 26.3 | 40.0 | 8.0 | 18.973 | O | 1 |
| 8913 | 25.0 | 27.0 | 40.0 | 8.0 | 18.723 | O | 1 |
| 8914 | 20.0 | 32.0 | 40.0 | 8.0 | 16.939 | O | 1 |
| 8915 | 10.0 | 42.0 | 40.0 | 8.0 | 13.371 | O | 1 |
| 8916 | 9.0 | 43.0 | 40.0 | 8.0 | 12.979 | O | 1 |
| 8917 | 8.0 | 44.0 | 40.0 | 8.0 | 12.561 | O | 1 |
| 8918 | 7.0 | 45.0 | 40.0 | 8.0 | 12.144 | O | 1 |
| 8919 | 6.0 | 46.0 | 40.0 | 8.0 | 11.726 | O | 1 |
| 8920 | 5.0 | 47.0 | 40.0 | 8.0 | 11.308 | O | 1 |
| 8921 | 4.0 | 48.0 | 40.0 | 8.0 | 10.890 | O | 1 |
| 8922 | 3.0 | 49.0 | 40.0 | 8.0 | 10.472 | O | 1 |
| 8923 | 2.0 | 50.0 | 40.0 | 8.0 | 10.054 | O | 1 |
| 8924 | 1.0 | 51.0 | 40.0 | 8.0 | 9.636 | O | 1 |
| 8925 | 0.0 | 52.0 | 40.0 | 8.0 | 9.218 | O | 1 |
| 8926 | 26.0 | 21.0 | 45.0 | 8.0 | 19.080 | X | 1 |
| 8927 | 25.8 | 21.2 | 45.0 | 8.0 | 19.009 | X | 1 |
| 8928 | 25.7 | 21.3 | 45.0 | 8.0 | 18.973 | O | 1 |
| 8929 | 25.0 | 22.0 | 45.0 | 8.0 | 18.723 | O | 1 |
| 8930 | 20.0 | 27.0 | 45.0 | 8.0 | 16.939 | O | 1 |
| 8931 | 10.0 | 37.0 | 45.0 | 8.0 | 13.371 | O | 1 |
| 8932 | 9.0 | 38.0 | 45.0 | 8.0 | 12.990 | O | 1 |
| 8933 | 8.0 | 39.0 | 45.0 | 8.0 | 12.572 | O | 1 |
| 8934 | 7.0 | 40.0 | 45.0 | 8.0 | 12.154 | O | 1 |
| 8935 | 6.0 | 41.0 | 45.0 | 8.0 | 11.736 | O | 1 |
| 8936 | 5.0 | 42.0 | 45.0 | 8.0 | 11.318 | O | 1 |
| 8937 | 4.0 | 43.0 | 45.0 | 8.0 | 10.900 | O | 1 |
| 8938 | 3.0 | 44.0 | 45.0 | 8.0 | 10.482 | O | 1 |
| 8939 | 2.0 | 45.0 | 45.0 | 8.0 | 10.064 | O | 1 |
| 8940 | 1.0 | 46.0 | 45.0 | 8.0 | 9.646 | O | 1 |
| 8941 | 0.0 | 47.0 | 45.0 | 8.0 | 9.229 | O | 1 |
| 8942 | 26.0 | 16.0 | 50.0 | 8.0 | 19.081 | X | 1 |
| 8943 | 25.8 | 16.2 | 50.0 | 8.0 | 19.009 | X | 1 |
| 8944 | 25.7 | 16.3 | 50.0 | 8.0 | 18.974 | O | 1 |
| 8945 | 25.0 | 17.0 | 50.0 | 8.0 | 18.724 | O | 1 |
| 8946 | 20.0 | 22.0 | 50.0 | 8.0 | 16.940 | O | 1 |
| 8947 | 10.0 | 32.0 | 50.0 | 8.0 | 13.372 | O | 1 |
| 8948 | 9.0 | 33.0 | 50.0 | 8.0 | 13.000 | O | 1 |
| 8949 | 8.0 | 34.0 | 50.0 | 8.0 | 12.582 | O | 1 |
| 8950 | 7.0 | 35.0 | 50.0 | 8.0 | 12.164 | O | 1 |
| 8951 | 6.0 | 36.0 | 50.0 | 8.0 | 11.747 | O | 1 |
| 8952 | 5.0 | 37.0 | 50.0 | 8.0 | 11.329 | O | 1 |
| 8953 | 4.0 | 38.0 | 50.0 | 8.0 | 10.911 | O | 1 |
| 8954 | 3.0 | 39.0 | 50.0 | 8.0 | 10.493 | O | 1 |
| 8955 | 2.0 | 40.0 | 50.0 | 8.0 | 10.075 | O | 1 |

[Table 161]

| 8956 | 1.0 | 41.0 | 50.0 | 8.0 | 9.657 | O | 1 |
|---|---|---|---|---|---|---|---|
| 8957 | 0.0 | 42.0 | 50.0 | 8.0 | 9.239 | O | 1 |
| 8958 | 26.0 | 11.0 | 55.0 | 8.0 | 19.081 | X | 1 |
| 8959 | 25.8 | 11.2 | 55.0 | 8.0 | 19.010 | X | 1 |
| 8960 | 25.7 | 11.3 | 55.0 | 8.0 | 18.974 | O | 1 |
| 8961 | 25.0 | 12.0 | 55.0 | 8.0 | 18.724 | O | 1 |
| 8962 | 20.0 | 17.0 | 55.0 | 8.0 | 16.940 | O | 1 |
| 8963 | 10.0 | 27.0 | 55.0 | 8.0 | 13.372 | O | 1 |
| 8964 | 9.0 | 28.0 | 55.0 | 8.0 | 13.011 | O | 1 |
| 8965 | 8.0 | 29.0 | 55.0 | 8.0 | 12.593 | O | 1 |
| 8966 | 7.0 | 30.0 | 55.0 | 8.0 | 12.175 | O | 1 |
| 8967 | 6.0 | 31.0 | 55.0 | 8.0 | 11.757 | O | 1 |
| 8968 | 5.0 | 32.0 | 55.0 | 8.0 | 11.339 | O | 1 |
| 8969 | 4.0 | 33.0 | 55.0 | 8.0 | 10.921 | O | 1 |
| 8970 | 3.0 | 34.0 | 55.0 | 8.0 | 10.503 | O | 1 |
| 8971 | 2.0 | 35.0 | 55.0 | 8.0 | 10.085 | O | 1 |
| 8972 | 1.0 | 36.0 | 55.0 | 8.0 | 9.667 | O | 1 |
| 8973 | 0.0 | 37.0 | 55.0 | 8.0 | 9.249 | O | 1 |
| 8974 | 26.0 | 6.0 | 60.0 | 8.0 | 19.081 | X | 1 |
| 8975 | 25.8 | 6.2 | 60.0 | 8.0 | 19.010 | X | 1 |
| 8976 | 25.7 | 6.3 | 60.0 | 8.0 | 18.974 | O | 1 |
| 8977 | 25.0 | 7.0 | 60.0 | 8.0 | 18.724 | O | 1 |
| 8978 | 20.0 | 12.0 | 60.0 | 8.0 | 16.940 | O | 1 |
| 8979 | 10.0 | 22.0 | 60.0 | 8.0 | 13.372 | O | 1 |
| 8980 | 9.0 | 23.0 | 60.0 | 8.0 | 13.015 | O | 1 |
| 8981 | 8.0 | 24.0 | 60.0 | 8.0 | 12.603 | O | 1 |
| 8982 | 7.0 | 25.0 | 60.0 | 8.0 | 12.185 | O | 1 |
| 8983 | 6.0 | 26.0 | 60.0 | 8.0 | 11.767 | O | 1 |
| 8984 | 5.0 | 27.0 | 60.0 | 8.0 | 11.350 | O | 1 |
| 8985 | 4.0 | 28.0 | 60.0 | 8.0 | 10.932 | O | 1 |
| 8986 | 3.0 | 29.0 | 60.0 | 8.0 | 10.514 | O | 1 |
| 8987 | 2.0 | 30.0 | 60.0 | 8.0 | 10.096 | O | 1 |
| 8988 | 1.0 | 31.0 | 60.0 | 8.0 | 9.678 | O | 1 |
| 8989 | 0.0 | 32.0 | 60.0 | 8.0 | 9.260 | O | 1 |
| 8990 | 26.0 | 1.0 | 65.0 | 8.0 | 19.081 | X | 1 |
| 8991 | 25.8 | 1.2 | 65.0 | 8.0 | 19.010 | X | 1 |
| 8992 | 25.7 | 1.3 | 65.0 | 8.0 | 18.974 | O | 1 |
| 8993 | 25.0 | 2.0 | 65.0 | 8.0 | 18.725 | O | 1 |
| 8994 | 20.0 | 7.0 | 65.0 | 8.0 | 16.941 | O | 1 |
| 8995 | 10.0 | 17.0 | 65.0 | 8.0 | 13.372 | O | 1 |
| 8996 | 9.0 | 18.0 | 65.0 | 8.0 | 13.016 | O | 1 |
| 8997 | 8.0 | 19.0 | 65.0 | 8.0 | 12.614 | O | 1 |
| 8998 | 7.0 | 20.0 | 65.0 | 8.0 | 12.196 | O | 1 |
| 8999 | 6.0 | 21.0 | 65.0 | 8.0 | 11.778 | O | 1 |
| 9000 | 5.0 | 22.0 | 65.0 | 8.0 | 11.360 | O | 1 |
| 9001 | 4.0 | 23.0 | 65.0 | 8.0 | 10.942 | O | 1 |
| 9002 | 3.0 | 24.0 | 65.0 | 8.0 | 10.524 | O | 1 |
| 9003 | 2.0 | 25.0 | 65.0 | 8.0 | 10.106 | O | 1 |
| 9004 | 1.0 | 26.0 | 65.0 | 8.0 | 9.688 | O | 1 |
| 9005 | 0.0 | 27.0 | 65.0 | 8.0 | 9.270 | O | 1 |

[Table 162]

| 9006 | 27.0 | 58.0 | 5.0 | 10.0 | 19.222 | X | 1 |
|---|---|---|---|---|---|---|---|
| 9007 | 26.4 | 58.6 | 5.0 | 10.0 | 19.008 | X | 1 |
| 9008 | 26.3 | 58.7 | 5.0 | 10.0 | 18.972 | O | 1 |
| 9009 | 26.0 | 59.0 | 5.0 | 10.0 | 18.865 | O | 1 |
| 9010 | 20.0 | 65.0 | 5.0 | 10.0 | 16.724 | O | 1 |
| 9011 | 10.0 | 75.0 | 5.0 | 10.0 | 13.126 | O | 1 |
| 9012 | 9.0 | 76.0 | 5.0 | 10.0 | 12.708 | O | 1 |
| 9013 | 8.0 | 77.0 | 5.0 | 10.0 | 12.290 | O | 1 |
| 9014 | 7.0 | 78.0 | 5.0 | 10.0 | 11.872 | O | 1 |
| 9015 | 6.0 | 79.0 | 5.0 | 10.0 | 11.454 | O | 1 |
| 9016 | 5.0 | 80.0 | 5.0 | 10.0 | 11.036 | O | 1 |
| 9017 | 4.0 | 81.0 | 5.0 | 10.0 | 10.618 | O | 1 |
| 9018 | 3.0 | 82.0 | 5.0 | 10.0 | 10.200 | O | 1 |
| 9019 | 2.0 | 83.0 | 5.0 | 10.0 | 9.782 | O | 1 |
| 9020 | 1.0 | 84.0 | 5.0 | 10.0 | 9.364 | O | 1 |
| 9021 | 0.0 | 85.0 | 5.0 | 10.0 | 8.946 | O | 1 |
| 9022 | 27.0 | 53.0 | 10.0 | 10.0 | 19.222 | X | 1 |
| 9023 | 26.4 | 53.6 | 10.0 | 10.0 | 19.008 | X | 1 |
| 9024 | 26.3 | 53.7 | 10.0 | 10.0 | 18.972 | O | 1 |
| 9025 | 26.0 | 54.0 | 10.0 | 10.0 | 18.865 | O | 1 |
| 9026 | 20.0 | 60.0 | 10.0 | 10.0 | 16.724 | O | 1 |
| 9027 | 10.0 | 70.0 | 10.0 | 10.0 | 13.136 | O | 1 |
| 9028 | 9.0 | 71.0 | 10.0 | 10.0 | 12.718 | O | 1 |
| 9029 | 8.0 | 72.0 | 10.0 | 10.0 | 12.300 | O | 1 |
| 9030 | 7.0 | 73.0 | 10.0 | 10.0 | 11.882 | O | 1 |
| 9031 | 6.0 | 74.0 | 10.0 | 10.0 | 11.464 | O | 1 |
| 9032 | 5.0 | 75.0 | 10.0 | 10.0 | 11.046 | O | 1 |
| 9033 | 4.0 | 76.0 | 10.0 | 10.0 | 10.628 | O | 1 |
| 9034 | 3.0 | 77.0 | 10.0 | 10.0 | 10.211 | O | 1 |
| 9035 | 2.0 | 78.0 | 10.0 | 10.0 | 9.793 | O | 1 |
| 9036 | 1.0 | 79.0 | 10.0 | 10.0 | 9.375 | O | 1 |
| 9037 | 0.0 | 80.0 | 10.0 | 10.0 | 8.957 | O | 1 |
| 9038 | 27.0 | 48.0 | 15.0 | 10.0 | 19.222 | X | 1 |
| 9039 | 26.4 | 48.6 | 15.0 | 10.0 | 19.008 | X | 1 |
| 9040 | 26.3 | 48.7 | 15.0 | 10.0 | 18.973 | O | 1 |
| 9041 | 26.0 | 49.0 | 15.0 | 10.0 | 18.865 | O | 1 |
| 9042 | 20.0 | 55.0 | 15.0 | 10.0 | 16.725 | O | 1 |
| 9043 | 10.0 | 65.0 | 15.0 | 10.0 | 13.146 | O | 1 |
| 9044 | 9.0 | 66.0 | 15.0 | 10.0 | 12.729 | O | 1 |
| 9045 | 8.0 | 67.0 | 15.0 | 10.0 | 12.311 | O | 1 |
| 9046 | 7.0 | 68.0 | 15.0 | 10.0 | 11.893 | O | 1 |
| 9047 | 6.0 | 69.0 | 15.0 | 10.0 | 11.475 | O | 1 |
| 9048 | 5.0 | 70.0 | 15.0 | 10.0 | 11.057 | O | 1 |
| 9049 | 4.0 | 71.0 | 15.0 | 10.0 | 10.639 | O | 1 |
| 9050 | 3.0 | 72.0 | 15.0 | 10.0 | 10.221 | O | 1 |
| 9051 | 2.0 | 73.0 | 15.0 | 10.0 | 9.803 | O | 1 |
| 9052 | 1.0 | 74.0 | 15.0 | 10.0 | 9.385 | O | 1 |
| 9053 | 0.0 | 75.0 | 15.0 | 10.0 | 8.967 | O | 1 |
| 9054 | 27.0 | 43.0 | 20.0 | 10.0 | 19.223 | X | 1 |
| 9055 | 26.4 | 43.6 | 20.0 | 10.0 | 19.009 | X | 1 |

[Table 163]

| 9056 | 26.3 | 43.7 | 20.0 | 10.0 | 18.973 | O | 1 |
|------|------|------|------|------|--------|---|---|
| 9057 | 26.0 | 44.0 | 20.0 | 10.0 | 18.866 | O | 1 |
| 9058 | 20.0 | 50.0 | 20.0 | 10.0 | 16.725 | O | 1 |
| 9059 | 10.0 | 60.0 | 20.0 | 10.0 | 13.157 | O | 1 |
| 9060 | 9.0 | 61.0 | 20.0 | 10.0 | 12.739 | O | 1 |
| 9061 | 8.0 | 62.0 | 20.0 | 10.0 | 12.321 | O | 1 |
| 9062 | 7.0 | 63.0 | 20.0 | 10.0 | 11.903 | O | 1 |
| 9063 | 6.0 | 64.0 | 20.0 | 10.0 | 11.485 | O | 1 |
| 9064 | 5.0 | 65.0 | 20.0 | 10.0 | 11.067 | O | 1 |
| 9065 | 4.0 | 66.0 | 20.0 | 10.0 | 10.649 | O | 1 |
| 9066 | 3.0 | 67.0 | 20.0 | 10.0 | 10.231 | O | 1 |
| 9067 | 2.0 | 68.0 | 20.0 | 10.0 | 9.814 | O | 1 |
| 9068 | 1.0 | 69.0 | 20.0 | 10.0 | 9.396 | O | 1 |
| 9069 | 0.0 | 70.0 | 20.0 | 10.0 | 8.978 | O | 1 |
| 9070 | 27.0 | 38.0 | 25.0 | 10.0 | 19.223 | X | 1 |
| 9071 | 26.4 | 38.6 | 25.0 | 10.0 | 19.009 | X | 1 |
| 9072 | 26.3 | 38.7 | 25.0 | 10.0 | 18.973 | O | 1 |
| 9073 | 26.0 | 39.0 | 25.0 | 10.0 | 18.866 | O | 1 |
| 9074 | 20.0 | 45.0 | 25.0 | 10.0 | 16.725 | O | 1 |
| 9075 | 10.0 | 55.0 | 25.0 | 10.0 | 13.157 | O | 1 |
| 9076 | 9.0 | 56.0 | 25.0 | 10.0 | 12.749 | O | 1 |
| 9077 | 8.0 | 57.0 | 25.0 | 10.0 | 12.332 | O | 1 |
| 9078 | 7.0 | 58.0 | 25.0 | 10.0 | 11.914 | O | 1 |
| 9079 | 6.0 | 59.0 | 25.0 | 10.0 | 11.496 | O | 1 |
| 9080 | 5.0 | 60.0 | 25.0 | 10.0 | 11.078 | O | 1 |
| 9081 | 4.0 | 61.0 | 25.0 | 10.0 | 10.660 | O | 1 |
| 9082 | 3.0 | 62.0 | 25.0 | 10.0 | 10.242 | O | 1 |
| 9083 | 2.0 | 63.0 | 25.0 | 10.0 | 9.824 | O | 1 |
| 9084 | 1.0 | 64.0 | 25.0 | 10.0 | 9.406 | O | 1 |
| 9085 | 0.0 | 65.0 | 25.0 | 10.0 | 8.988 | O | 1 |
| 9086 | 27.0 | 33.0 | 30.0 | 10.0 | 19.223 | X | 1 |
| 9087 | 26.4 | 33.6 | 30.0 | 10.0 | 19.009 | X | 1 |
| 9088 | 26.3 | 33.7 | 30.0 | 10.0 | 18.973 | O | 1 |
| 9089 | 26.0 | 34.0 | 30.0 | 10.0 | 18.866 | O | 1 |
| 9090 | 20.0 | 40.0 | 30.0 | 10.0 | 16.725 | O | 1 |
| 9091 | 10.0 | 50.0 | 30.0 | 10.0 | 13.157 | O | 1 |
| 9092 | 9.0 | 51.0 | 30.0 | 10.0 | 12.760 | O | 1 |
| 9093 | 8.0 | 52.0 | 30.0 | 10.0 | 12.342 | O | 1 |
| 9094 | 7.0 | 53.0 | 30.0 | 10.0 | 11.924 | O | 1 |
| 9095 | 6.0 | 54.0 | 30.0 | 10.0 | 11.506 | O | 1 |
| 9096 | 5.0 | 55.0 | 30.0 | 10.0 | 11.088 | O | 1 |
| 9097 | 4.0 | 56.0 | 30.0 | 10.0 | 10.670 | O | 1 |
| 9098 | 3.0 | 57.0 | 30.0 | 10.0 | 10.252 | O | 1 |
| 9099 | 2.0 | 58.0 | 30.0 | 10.0 | 9.834 | O | 1 |
| 9100 | 1.0 | 59.0 | 30.0 | 10.0 | 9.417 | O | 1 |
| 9101 | 0.0 | 60.0 | 30.0 | 10.0 | 8.999 | O | 1 |
| 9102 | 27.0 | 28.0 | 35.0 | 10.0 | 19.223 | X | 1 |
| 9103 | 26.4 | 28.6 | 35.0 | 10.0 | 19.009 | X | 1 |
| 9104 | 26.3 | 28.7 | 35.0 | 10.0 | 18.974 | O | 1 |
| 9105 | 26.0 | 29.0 | 35.0 | 10.0 | 18.867 | O | 1 |

[Table 164]

| 9106 | 20.0 | 35.0 | 35.0 | 10.0 | 16.726 | O | 1 |
|------|------|------|------|------|--------|---|---|
| 9107 | 10.0 | 45.0 | 35.0 | 10.0 | 13.158 | O | 1 |
| 9108 | 9.0 | 46.0 | 35.0 | 10.0 | 12.770 | O | 1 |
| 9109 | 8.0 | 47.0 | 35.0 | 10.0 | 12.352 | O | 1 |
| 9110 | 7.0 | 48.0 | 35.0 | 10.0 | 11.935 | O | 1 |
| 9111 | 6.0 | 49.0 | 35.0 | 10.0 | 11.517 | O | 1 |
| 9112 | 5.0 | 50.0 | 35.0 | 10.0 | 11.099 | O | 1 |
| 9113 | 4.0 | 51.0 | 35.0 | 10.0 | 10.681 | O | 1 |
| 9114 | 3.0 | 52.0 | 35.0 | 10.0 | 10.263 | O | 1 |
| 9115 | 2.0 | 53.0 | 35.0 | 10.0 | 9.845 | O | 1 |
| 9116 | 1.0 | 54.0 | 35.0 | 10.0 | 9.427 | O | 1 |
| 9117 | 0.0 | 55.0 | 35.0 | 10.0 | 9.009 | O | 1 |
| 9118 | 27.0 | 23.0 | 40.0 | 10.0 | 19.224 | X | 1 |
| 9119 | 26.4 | 23.6 | 40.0 | 10.0 | 19.010 | X | 1 |
| 9120 | 26.3 | 23.7 | 40.0 | 10.0 | 18.974 | O | 1 |
| 9121 | 26.0 | 24.0 | 40.0 | 10.0 | 18.867 | O | 1 |
| 9122 | 20.0 | 30.0 | 40.0 | 10.0 | 16.726 | O | 1 |
| 9123 | 10.0 | 40.0 | 40.0 | 10.0 | 13.158 | O | 1 |
| 9124 | 9.0 | 41.0 | 40.0 | 10.0 | 12.781 | O | 1 |
| 9125 | 8.0 | 42.0 | 40.0 | 10.0 | 12.363 | O | 1 |
| 9126 | 7.0 | 43.0 | 40.0 | 10.0 | 11.945 | O | 1 |
| 9127 | 6.0 | 44.0 | 40.0 | 10.0 | 11.527 | O | 1 |
| 9128 | 5.0 | 45.0 | 40.0 | 10.0 | 11.109 | O | 1 |
| 9129 | 4.0 | 46.0 | 40.0 | 10.0 | 10.691 | O | 1 |
| 9130 | 3.0 | 47.0 | 40.0 | 10.0 | 10.273 | O | 1 |
| 9131 | 2.0 | 48.0 | 40.0 | 10.0 | 9.855 | O | 1 |
| 9132 | 1.0 | 49.0 | 40.0 | 10.0 | 9.437 | O | 1 |
| 9133 | 0.0 | 50.0 | 40.0 | 10.0 | 9.020 | O | 1 |
| 9134 | 27.0 | 18.0 | 45.0 | 10.0 | 19.224 | X | 1 |
| 9135 | 26.4 | 18.6 | 45.0 | 10.0 | 19.010 | X | 1 |
| 9136 | 26.3 | 18.7 | 45.0 | 10.0 | 18.974 | O | 1 |
| 9137 | 26.0 | 19.0 | 45.0 | 10.0 | 18.867 | O | 1 |
| 9138 | 20.0 | 25.0 | 45.0 | 10.0 | 16.726 | O | 1 |
| 9139 | 10.0 | 35.0 | 45.0 | 10.0 | 13.158 | O | 1 |
| 9140 | 9.0 | 36.0 | 45.0 | 10.0 | 12.791 | O | 1 |
| 9141 | 8.0 | 37.0 | 45.0 | 10.0 | 12.373 | O | 1 |
| 9142 | 7.0 | 38.0 | 45.0 | 10.0 | 11.955 | O | 1 |
| 9143 | 6.0 | 39.0 | 45.0 | 10.0 | 11.537 | O | 1 |
| 9144 | 5.0 | 40.0 | 45.0 | 10.0 | 11.120 | O | 1 |
| 9145 | 4.0 | 41.0 | 45.0 | 10.0 | 10.702 | O | 1 |
| 9146 | 3.0 | 42.0 | 45.0 | 10.0 | 10.284 | O | 1 |
| 9147 | 2.0 | 43.0 | 45.0 | 10.0 | 9.866 | O | 1 |
| 9148 | 1.0 | 44.0 | 45.0 | 10.0 | 9.448 | O | 1 |
| 9149 | 0.0 | 45.0 | 45.0 | 10.0 | 9.030 | O | 1 |
| 9150 | 27.0 | 13.0 | 50.0 | 10.0 | 19.224 | X | 1 |
| 9151 | 26.4 | 13.6 | 50.0 | 10.0 | 19.010 | X | 1 |
| 9152 | 26.3 | 13.7 | 50.0 | 10.0 | 18.975 | O | 1 |
| 9153 | 26.0 | 14.0 | 50.0 | 10.0 | 18.868 | O | 1 |
| 9154 | 20.0 | 20.0 | 50.0 | 10.0 | 16.727 | O | 1 |
| 9155 | 10.0 | 30.0 | 50.0 | 10.0 | 13.159 | O | 1 |

[Table 165]

| 9156 | 9.0 | 31.0 | 50.0 | 10.0 | 12.802 | O | 1 |
|---|---|---|---|---|---|---|---|
| 9157 | 8.0 | 32.0 | 50.0 | 10.0 | 12.384 | O | 1 |
| 9158 | 7.0 | 33.0 | 50.0 | 10.0 | 11.966 | O | 1 |
| 9159 | 6.0 | 34.0 | 50.0 | 10.0 | 11.548 | O | 1 |
| 9160 | 5.0 | 35.0 | 50.0 | 10.0 | 11.130 | O | 1 |
| 9161 | 4.0 | 36.0 | 50.0 | 10.0 | 10.712 | O | 1 |
| 9162 | 3.0 | 37.0 | 50.0 | 10.0 | 10.294 | O | 1 |
| 9163 | 2.0 | 38.0 | 50.0 | 10.0 | 9.876 | O | 1 |
| 9164 | 1.0 | 39.0 | 50.0 | 10.0 | 9.458 | O | 1 |
| 9165 | 0.0 | 40.0 | 50.0 | 10.0 | 9.040 | O | 1 |
| 9166 | 27.0 | 8.0 | 55.0 | 10.0 | 19.225 | X | 1 |
| 9167 | 26.4 | 8.6 | 55.0 | 10.0 | 19.011 | X | 1 |
| 9168 | 26.3 | 8.7 | 55.0 | 10.0 | 18.975 | O | 1 |
| 9169 | 26.0 | 9.0 | 55.0 | 10.0 | 18.868 | O | 1 |
| 9170 | 20.0 | 15.0 | 55.0 | 10.0 | 16.727 | O | 1 |
| 9171 | 10.0 | 25.0 | 55.0 | 10.0 | 13.159 | O | 1 |
| 9172 | 9.0 | 26.0 | 55.0 | 10.0 | 12.802 | O | 1 |
| 9173 | 8.0 | 27.0 | 55.0 | 10.0 | 12.394 | O | 1 |
| 9174 | 7.0 | 28.0 | 55.0 | 10.0 | 11.976 | O | 1 |
| 9175 | 6.0 | 29.0 | 55.0 | 10.0 | 11.558 | O | 1 |
| 9176 | 5.0 | 30.0 | 55.0 | 10.0 | 11.140 | O | 1 |
| 9177 | 4.0 | 31.0 | 55.0 | 10.0 | 10.723 | O | 1 |
| 9178 | 3.0 | 32.0 | 55.0 | 10.0 | 10.305 | O | 1 |
| 9179 | 2.0 | 33.0 | 55.0 | 10.0 | 9.887 | O | 1 |
| 9180 | 1.0 | 34.0 | 55.0 | 10.0 | 9.469 | O | 1 |
| 9181 | 0.0 | 35.0 | 55.0 | 10.0 | 9.051 | O | 1 |
| 9182 | 27.0 | 3.0 | 60.0 | 10.0 | 19.225 | X | 1 |
| 9183 | 26.4 | 3.6 | 60.0 | 10.0 | 19.011 | X | 1 |
| 9184 | 26.3 | 3.7 | 60.0 | 10.0 | 18.975 | O | 1 |
| 9185 | 26.0 | 4.0 | 60.0 | 10.0 | 18.868 | O | 1 |
| 9186 | 20.0 | 10.0 | 60.0 | 10.0 | 16.727 | O | 1 |
| 9187 | 10.0 | 20.0 | 60.0 | 10.0 | 13.159 | O | 1 |
| 9188 | 9.0 | 21.0 | 60.0 | 10.0 | 12.802 | O | 1 |
| 9189 | 8.0 | 22.0 | 60.0 | 10.0 | 12.405 | O | 1 |
| 9190 | 7.0 | 23.0 | 60.0 | 10.0 | 11.987 | O | 1 |
| 9191 | 6.0 | 24.0 | 60.0 | 10.0 | 11.569 | O | 1 |
| 9192 | 5.0 | 25.0 | 60.0 | 10.0 | 11.151 | O | 1 |
| 9193 | 4.0 | 26.0 | 60.0 | 10.0 | 10.733 | O | 1 |
| 9194 | 3.0 | 27.0 | 60.0 | 10.0 | 10.315 | O | 1 |
| 9195 | 2.0 | 28.0 | 60.0 | 10.0 | 9.897 | O | 1 |
| 9196 | 1.0 | 29.0 | 60.0 | 10.0 | 9.479 | O | 1 |
| 9197 | 0.0 | 30.0 | 60.0 | 10.0 | 9.061 | O | 1 |

Tables 166 to 181 show the composition, combustion heat amount, and GWP of the working medium of a four-component system of propane, HFO-1123, HFO-1234ze(E), and $CF_3I$.

[Table 166]

| Case | propane | HFO-1123 | HFO-1234ze(E) | CF$_3$I | Heat of Combustion | Evaluation | GWP |
|---|---|---|---|---|---|---|---|
| 9198 | 25.0 | 65.0 | 5.0 | 5.0 | 19.107 | X | 1 |
| 9199 | 24.8 | 65.2 | 5.0 | 5.0 | 19.036 | X | 1 |
| 9200 | 24.7 | 65.3 | 5.0 | 5.0 | 19.000 | X | 1 |
| 9201 | 24.0 | 66.0 | 5.0 | 5.0 | 18.750 | O | 1 |
| 9202 | 20.0 | 70.0 | 5.0 | 5.0 | 17.323 | O | 1 |
| 9203 | 10.0 | 80.0 | 5.0 | 5.0 | 13.666 | O | 1 |
| 9204 | 9.0 | 81.0 | 5.0 | 5.0 | 13.248 | O | 1 |
| 9205 | 8.0 | 82.0 | 5.0 | 5.0 | 12.830 | O | 1 |
| 9206 | 7.0 | 83.0 | 5.0 | 5.0 | 12.412 | O | 1 |
| 9207 | 6.0 | 84.0 | 5.0 | 5.0 | 11.994 | O | 1 |
| 9208 | 5.0 | 85.0 | 5.0 | 5.0 | 11.576 | O | 1 |
| 9209 | 4.0 | 86.0 | 5.0 | 5.0 | 11.158 | O | 1 |
| 9210 | 3.0 | 87.0 | 5.0 | 5.0 | 10.740 | O | 1 |
| 9211 | 2.0 | 88.0 | 5.0 | 5.0 | 10.322 | O | 1 |
| 9212 | 1.0 | 89.0 | 5.0 | 5.0 | 9.905 | O | 1 |
| 9213 | 0.0 | 90.0 | 5.0 | 5.0 | 9.487 | O | 1 |
| 9214 | 25.0 | 60.0 | 10.0 | 5.0 | 19.108 | X | 1 |
| 9215 | 24.7 | 60.3 | 10.0 | 5.0 | 19.001 | X | 1 |
| 9216 | 24.6 | 60.4 | 10.0 | 5.0 | 18.965 | O | 1 |
| 9217 | 24.0 | 61.0 | 10.0 | 5.0 | 18.751 | O | 1 |
| 9218 | 20.0 | 65.0 | 10.0 | 5.0 | 17.323 | O | 1 |
| 9219 | 10.0 | 75.0 | 10.0 | 5.0 | 13.676 | O | 1 |
| 9220 | 9.0 | 76.0 | 10.0 | 5.0 | 13.258 | O | 1 |
| 9221 | 8.0 | 77.0 | 10.0 | 5.0 | 12.840 | O | 1 |
| 9222 | 7.0 | 78.0 | 10.0 | 5.0 | 12.422 | O | 1 |
| 9223 | 6.0 | 79.0 | 10.0 | 5.0 | 12.005 | O | 1 |
| 9224 | 5.0 | 80.0 | 10.0 | 5.0 | 11.587 | O | 1 |
| 9225 | 4.0 | 81.0 | 10.0 | 5.0 | 11.169 | O | 1 |
| 9226 | 3.0 | 82.0 | 10.0 | 5.0 | 10.751 | O | 1 |
| 9227 | 2.0 | 83.0 | 10.0 | 5.0 | 10.333 | O | 1 |
| 9228 | 1.0 | 84.0 | 10.0 | 5.0 | 9.915 | O | 1 |
| 9229 | 0.0 | 85.0 | 10.0 | 5.0 | 9.497 | O | 1 |
| 9230 | 25.0 | 55.0 | 15.0 | 5.0 | 19.108 | X | 1 |
| 9231 | 24.7 | 55.3 | 15.0 | 5.0 | 19.001 | X | 1 |
| 9232 | 24.6 | 55.4 | 15.0 | 5.0 | 18.965 | O | 1 |
| 9233 | 24.0 | 56.0 | 15.0 | 5.0 | 18.751 | O | 1 |
| 9234 | 20.0 | 60.0 | 15.0 | 5.0 | 17.324 | O | 1 |
| 9235 | 10.0 | 70.0 | 15.0 | 5.0 | 13.687 | O | 1 |
| 9236 | 9.0 | 71.0 | 15.0 | 5.0 | 13.269 | O | 1 |
| 9237 | 8.0 | 72.0 | 15.0 | 5.0 | 12.851 | O | 1 |
| 9238 | 7.0 | 73.0 | 15.0 | 5.0 | 12.433 | O | 1 |
| 9239 | 6.0 | 74.0 | 15.0 | 5.0 | 12.015 | O | 1 |
| 9240 | 5.0 | 75.0 | 15.0 | 5.0 | 11.597 | O | 1 |
| 9241 | 4.0 | 76.0 | 15.0 | 5.0 | 11.179 | O | 1 |
| 9242 | 3.0 | 77.0 | 15.0 | 5.0 | 10.761 | O | 1 |
| 9243 | 2.0 | 78.0 | 15.0 | 5.0 | 10.343 | O | 1 |
| 9244 | 1.0 | 79.0 | 15.0 | 5.0 | 9.925 | O | 1 |
| 9245 | 0.0 | 80.0 | 15.0 | 5.0 | 9.508 | O | 1 |
| 9246 | 25.0 | 50.0 | 20.0 | 5.0 | 19.108 | X | 1 |
| 9247 | 24.7 | 50.3 | 20.0 | 5.0 | 19.001 | X | 1 |

[Table 167]

| 9248 | 24.6 | 50.4 | 20.0 | 5.0 | 18.965 | O | 1 |
|---|---|---|---|---|---|---|---|
| 9249 | 24.0 | 51.0 | 20.0 | 5.0 | 18.751 | O | 1 |
| 9250 | 20.0 | 55.0 | 20.0 | 5.0 | 17.324 | O | 1 |
| 9251 | 10.0 | 65.0 | 20.0 | 5.0 | 13.697 | O | 1 |
| 9252 | 9.0 | 66.0 | 20.0 | 5.0 | 13.279 | O | 1 |
| 9253 | 8.0 | 67.0 | 20.0 | 5.0 | 12.861 | O | 1 |
| 9254 | 7.0 | 68.0 | 20.0 | 5.0 | 12.443 | O | 1 |
| 9255 | 6.0 | 69.0 | 20.0 | 5.0 | 12.025 | O | 1 |
| 9256 | 5.0 | 70.0 | 20.0 | 5.0 | 11.608 | O | 1 |
| 9257 | 4.0 | 71.0 | 20.0 | 5.0 | 11.190 | O | 1 |
| 9258 | 3.0 | 72.0 | 20.0 | 5.0 | 10.772 | O | 1 |
| 9259 | 2.0 | 73.0 | 20.0 | 5.0 | 10.354 | O | 1 |
| 9260 | 1.0 | 74.0 | 20.0 | 5.0 | 9.936 | O | 1 |
| 9261 | 0.0 | 75.0 | 20.0 | 5.0 | 9.518 | O | 1 |
| 9262 | 25.0 | 45.0 | 25.0 | 5.0 | 19.108 | X | 1 |
| 9263 | 24.7 | 45.3 | 25.0 | 5.0 | 19.001 | X | 1 |
| 9264 | 24.6 | 45.4 | 25.0 | 5.0 | 18.966 | O | 1 |
| 9265 | 24.0 | 46.0 | 25.0 | 5.0 | 18.752 | O | 1 |
| 9266 | 20.0 | 50.0 | 25.0 | 5.0 | 17.324 | O | 1 |
| 9267 | 10.0 | 60.0 | 25.0 | 5.0 | 13.708 | O | 1 |
| 9268 | 9.0 | 61.0 | 25.0 | 5.0 | 13.290 | O | 1 |
| 9269 | 8.0 | 62.0 | 25.0 | 5.0 | 12.872 | O | 1 |
| 9270 | 7.0 | 63.0 | 25.0 | 5.0 | 12.454 | O | 1 |
| 9271 | 6.0 | 64.0 | 25.0 | 5.0 | 12.036 | O | 1 |
| 9272 | 5.0 | 65.0 | 25.0 | 5.0 | 11.618 | O | 1 |
| 9273 | 4.0 | 66.0 | 25.0 | 5.0 | 11.200 | O | 1 |
| 9274 | 3.0 | 67.0 | 25.0 | 5.0 | 10.782 | O | 1 |
| 9275 | 2.0 | 68.0 | 25.0 | 5.0 | 10.364 | O | 1 |
| 9276 | 1.0 | 69.0 | 25.0 | 5.0 | 9.946 | O | 1 |
| 9277 | 0.0 | 70.0 | 25.0 | 5.0 | 9.528 | O | 1 |
| 9278 | 25.0 | 40.0 | 30.0 | 5.0 | 19.109 | X | 1 |
| 9279 | 24.7 | 40.3 | 30.0 | 5.0 | 19.002 | X | 1 |
| 9280 | 24.6 | 40.4 | 30.0 | 5.0 | 18.966 | O | 1 |
| 9281 | 24.0 | 41.0 | 30.0 | 5.0 | 18.752 | O | 1 |
| 9282 | 20.0 | 45.0 | 30.0 | 5.0 | 17.325 | O | 1 |
| 9283 | 10.0 | 55.0 | 30.0 | 5.0 | 13.718 | O | 1 |
| 9284 | 9.0 | 56.0 | 30.0 | 5.0 | 13.300 | O | 1 |
| 9285 | 8.0 | 57.0 | 30.0 | 5.0 | 12.882 | O | 1 |
| 9286 | 7.0 | 58.0 | 30.0 | 5.0 | 12.464 | O | 1 |
| 9287 | 6.0 | 59.0 | 30.0 | 5.0 | 12.046 | O | 1 |
| 9288 | 5.0 | 60.0 | 30.0 | 5.0 | 11.628 | O | 1 |
| 9289 | 4.0 | 61.0 | 30.0 | 5.0 | 11.211 | O | 1 |
| 9290 | 3.0 | 62.0 | 30.0 | 5.0 | 10.793 | O | 1 |
| 9291 | 2.0 | 63.0 | 30.0 | 5.0 | 10.375 | O | 1 |
| 9292 | 1.0 | 64.0 | 30.0 | 5.0 | 9.957 | O | 1 |
| 9293 | 0.0 | 65.0 | 30.0 | 5.0 | 9.539 | O | 1 |
| 9294 | 25.0 | 35.0 | 35.0 | 5.0 | 19.109 | X | 1 |
| 9295 | 24.7 | 35.3 | 35.0 | 5.0 | 19.002 | X | 1 |
| 9296 | 24.6 | 35.4 | 35.0 | 5.0 | 18.966 | O | 1 |
| 9297 | 24.0 | 36.0 | 35.0 | 5.0 | 18.752 | O | 1 |

[Table 168]

| 9298 | 20.0 | 40.0 | 35.0 | 5.0 | 17.325 | O | 1 |
|------|------|------|------|-----|--------|---|---|
| 9299 | 10.0 | 50.0 | 35.0 | 5.0 | 13.729 | O | 1 |
| 9300 | 9.0 | 51.0 | 35.0 | 5.0 | 13.311 | O | 1 |
| 9301 | 8.0 | 52.0 | 35.0 | 5.0 | 12.893 | O | 1 |
| 9302 | 7.0 | 53.0 | 35.0 | 5.0 | 12.475 | O | 1 |
| 9303 | 6.0 | 54.0 | 35.0 | 5.0 | 12.057 | O | 1 |
| 9304 | 5.0 | 55.0 | 35.0 | 5.0 | 11.639 | O | 1 |
| 9305 | 4.0 | 56.0 | 35.0 | 5.0 | 11.221 | O | 1 |
| 9306 | 3.0 | 57.0 | 35.0 | 5.0 | 10.803 | O | 1 |
| 9307 | 2.0 | 58.0 | 35.0 | 5.0 | 10.385 | O | 1 |
| 9308 | 1.0 | 59.0 | 35.0 | 5.0 | 9.967 | O | 1 |
| 9309 | 0.0 | 60.0 | 35.0 | 5.0 | 9.549 | O | 1 |
| 9310 | 25.0 | 30.0 | 40.0 | 5.0 | 19.109 | X | 1 |
| 9311 | 24.7 | 30.3 | 40.0 | 5.0 | 19.002 | X | 1 |
| 9312 | 24.6 | 30.4 | 40.0 | 5.0 | 18.967 | O | 1 |
| 9313 | 24.0 | 31.0 | 40.0 | 5.0 | 18.752 | O | 1 |
| 9314 | 20.0 | 35.0 | 40.0 | 5.0 | 17.325 | O | 1 |
| 9315 | 10.0 | 45.0 | 40.0 | 5.0 | 13.739 | O | 1 |
| 9316 | 9.0 | 46.0 | 40.0 | 5.0 | 13.321 | O | 1 |
| 9317 | 8.0 | 47.0 | 40.0 | 5.0 | 12.903 | O | 1 |
| 9318 | 7.0 | 48.0 | 40.0 | 5.0 | 12.485 | O | 1 |
| 9319 | 6.0 | 49.0 | 40.0 | 5.0 | 12.067 | O | 1 |
| 9320 | 5.0 | 50.0 | 40.0 | 5.0 | 11.649 | O | 1 |
| 9321 | 4.0 | 51.0 | 40.0 | 5.0 | 11.231 | O | 1 |
| 9322 | 3.0 | 52.0 | 40.0 | 5.0 | 10.814 | O | 1 |
| 9323 | 2.0 | 53.0 | 40.0 | 5.0 | 10.396 | O | 1 |
| 9324 | 1.0 | 54.0 | 40.0 | 5.0 | 9.978 | O | 1 |
| 9325 | 0.0 | 55.0 | 40.0 | 5.0 | 9.560 | O | 1 |
| 9326 | 25.0 | 25.0 | 45.0 | 5.0 | 19.110 | X | 1 |
| 9327 | 24.7 | 25.3 | 45.0 | 5.0 | 19.003 | X | 1 |
| 9328 | 24.6 | 25.4 | 45.0 | 5.0 | 18.967 | O | 1 |
| 9329 | 24.0 | 26.0 | 45.0 | 5.0 | 18.753 | O | 1 |
| 9330 | 20.0 | 30.0 | 45.0 | 5.0 | 17.326 | O | 1 |
| 9331 | 10.0 | 40.0 | 45.0 | 5.0 | 13.749 | O | 1 |
| 9332 | 9.0 | 41.0 | 45.0 | 5.0 | 13.331 | O | 1 |
| 9333 | 8.0 | 42.0 | 45.0 | 5.0 | 12.914 | O | 1 |
| 9334 | 7.0 | 43.0 | 45.0 | 5.0 | 12.496 | O | 1 |
| 9335 | 6.0 | 44.0 | 45.0 | 5.0 | 12.078 | O | 1 |
| 9336 | 5.0 | 45.0 | 45.0 | 5.0 | 11.660 | O | 1 |
| 9337 | 4.0 | 46.0 | 45.0 | 5.0 | 11.242 | O | 1 |
| 9338 | 3.0 | 47.0 | 45.0 | 5.0 | 10.824 | O | 1 |
| 9339 | 2.0 | 48.0 | 45.0 | 5.0 | 10.406 | O | 1 |
| 9340 | 1.0 | 49.0 | 45.0 | 5.0 | 9.988 | O | 1 |
| 9341 | 0.0 | 50.0 | 45.0 | 5.0 | 9.570 | O | 1 |
| 9342 | 25.0 | 20.0 | 50.0 | 5.0 | 19.110 | X | 1 |
| 9343 | 24.7 | 20.3 | 50.0 | 5.0 | 19.003 | X | 1 |
| 9344 | 24.6 | 20.4 | 50.0 | 5.0 | 18.967 | O | 1 |
| 9345 | 24.0 | 21.0 | 50.0 | 5.0 | 18.753 | O | 1 |
| 9346 | 20.0 | 25.0 | 50.0 | 5.0 | 17.326 | O | 1 |
| 9347 | 10.0 | 35.0 | 50.0 | 5.0 | 13.758 | O | 1 |

[Table 169]

| 9348 | 9.0 | 36.0 | 50.0 | 5.0 | 13.342 | O | 1 |
|------|-----|------|------|-----|--------|---|---|
| 9349 | 8.0 | 37.0 | 50.0 | 5.0 | 12.924 | O | 1 |
| 9350 | 7.0 | 38.0 | 50.0 | 5.0 | 12.506 | O | 1 |
| 9351 | 6.0 | 39.0 | 50.0 | 5.0 | 12.088 | O | 1 |
| 9352 | 5.0 | 40.0 | 50.0 | 5.0 | 11.670 | O | 1 |
| 9353 | 4.0 | 41.0 | 50.0 | 5.0 | 11.252 | O | 1 |
| 9354 | 3.0 | 42.0 | 50.0 | 5.0 | 10.834 | O | 1 |
| 9355 | 2.0 | 43.0 | 50.0 | 5.0 | 10.417 | O | 1 |
| 9356 | 1.0 | 44.0 | 50.0 | 5.0 | 9.999 | O | 1 |
| 9357 | 0.0 | 45.0 | 50.0 | 5.0 | 9.581 | O | 1 |
| 9358 | 25.0 | 15.0 | 55.0 | 5.0 | 19.110 | X | 1 |
| 9359 | 24.7 | 15.3 | 55.0 | 5.0 | 19.003 | X | 1 |
| 9360 | 24.6 | 15.4 | 55.0 | 5.0 | 18.967 | O | 1 |
| 9361 | 24.0 | 16.0 | 55.0 | 5.0 | 18.753 | O | 1 |
| 9362 | 20.0 | 20.0 | 55.0 | 5.0 | 17.326 | O | 1 |
| 9363 | 10.0 | 30.0 | 55.0 | 5.0 | 13.758 | O | 1 |
| 9364 | 9.0 | 31.0 | 55.0 | 5.0 | 13.352 | O | 1 |
| 9365 | 8.0 | 32.0 | 55.0 | 5.0 | 12.934 | O | 1 |
| 9366 | 7.0 | 33.0 | 55.0 | 5.0 | 12.517 | O | 1 |
| 9367 | 6.0 | 34.0 | 55.0 | 5.0 | 12.099 | O | 1 |
| 9368 | 5.0 | 35.0 | 55.0 | 5.0 | 11.681 | O | 1 |
| 9369 | 4.0 | 36.0 | 55.0 | 5.0 | 11.263 | O | 1 |
| 9370 | 3.0 | 37.0 | 55.0 | 5.0 | 10.845 | O | 1 |
| 9371 | 2.0 | 38.0 | 55.0 | 5.0 | 10.427 | O | 1 |
| 9372 | 1.0 | 39.0 | 55.0 | 5.0 | 10.009 | O | 1 |
| 9373 | 0.0 | 40.0 | 55.0 | 5.0 | 9.591 | O | 1 |
| 9374 | 25.0 | 10.0 | 60.0 | 5.0 | 19.110 | X | 1 |
| 9375 | 24.7 | 10.3 | 60.0 | 5.0 | 19.003 | X | 1 |
| 9376 | 24.6 | 10.4 | 60.0 | 5.0 | 18.968 | O | 1 |
| 9377 | 24.0 | 11.0 | 60.0 | 5.0 | 18.754 | O | 1 |
| 9378 | 20.0 | 15.0 | 60.0 | 5.0 | 17.326 | O | 1 |
| 9379 | 10.0 | 25.0 | 60.0 | 5.0 | 13.758 | O | 1 |
| 9380 | 9.0 | 26.0 | 60.0 | 5.0 | 13.363 | O | 1 |
| 9381 | 8.0 | 27.0 | 60.0 | 5.0 | 12.945 | O | 1 |
| 9382 | 7.0 | 28.0 | 60.0 | 5.0 | 12.527 | O | 1 |
| 9383 | 6.0 | 29.0 | 60.0 | 5.0 | 12.109 | O | 1 |
| 9384 | 5.0 | 30.0 | 60.0 | 5.0 | 11.691 | O | 1 |
| 9385 | 4.0 | 31.0 | 60.0 | 5.0 | 11.273 | O | 1 |
| 9386 | 3.0 | 32.0 | 60.0 | 5.0 | 10.855 | O | 1 |
| 9387 | 2.0 | 33.0 | 60.0 | 5.0 | 10.437 | O | 1 |
| 9388 | 1.0 | 34.0 | 60.0 | 5.0 | 10.020 | O | 1 |
| 9389 | 0.0 | 35.0 | 60.0 | 5.0 | 9.602 | O | 1 |
| 9390 | 25.0 | 5.0 | 65.0 | 5.0 | 19.111 | X | 1 |
| 9391 | 24.7 | 5.3 | 65.0 | 5.0 | 19.004 | X | 1 |
| 9392 | 24.6 | 5.4 | 65.0 | 5.0 | 18.968 | O | 1 |
| 9393 | 24.0 | 6.0 | 65.0 | 5.0 | 18.754 | O | 1 |
| 9394 | 20.0 | 10.0 | 65.0 | 5.0 | 17.327 | O | 1 |
| 9395 | 10.0 | 20.0 | 65.0 | 5.0 | 13.759 | O | 1 |
| 9396 | 9.0 | 21.0 | 65.0 | 5.0 | 13.373 | O | 1 |
| 9397 | 8.0 | 22.0 | 65.0 | 5.0 | 12.955 | O | 1 |

[Table 170]

| 9398 | 7.0 | 23.0 | 65.0 | 5.0 | 12.537 | O | 1 |
|---|---|---|---|---|---|---|---|
| 9399 | 6.0 | 24.0 | 65.0 | 5.0 | 12.120 | O | 1 |
| 9400 | 5.0 | 25.0 | 65.0 | 5.0 | 11.702 | O | 1 |
| 9401 | 4.0 | 26.0 | 65.0 | 5.0 | 11.284 | O | 1 |
| 9402 | 3.0 | 27.0 | 65.0 | 5.0 | 10.866 | O | 1 |
| 9403 | 2.0 | 28.0 | 65.0 | 5.0 | 10.448 | O | 1 |
| 9404 | 1.0 | 29.0 | 65.0 | 5.0 | 10.030 | O | 1 |
| 9405 | 0.0 | 30.0 | 65.0 | 5.0 | 9.612 | O | 1 |
| 9406 | 25.0 | 0.0 | 70.0 | 5.0 | 19.111 | X | 1 |
| 9407 | 24.7 | 0.3 | 70.0 | 5.0 | 19.004 | X | 1 |
| 9408 | 24.6 | 0.4 | 70.0 | 5.0 | 18.968 | O | 1 |
| 9409 | 24.0 | 1.0 | 70.0 | 5.0 | 18.754 | O | 1 |
| 9410 | 20.0 | 5.0 | 70.0 | 5.0 | 17.327 | O | 1 |
| 9411 | 10.0 | 15.0 | 70.0 | 5.0 | 13.759 | O | 1 |
| 9412 | 9.0 | 16.0 | 70.0 | 5.0 | 13.384 | O | 1 |
| 9413 | 8.0 | 17.0 | 70.0 | 5.0 | 12.966 | O | 1 |
| 9414 | 7.0 | 18.0 | 70.0 | 5.0 | 12.548 | O | 1 |
| 9415 | 6.0 | 19.0 | 70.0 | 5.0 | 12.130 | O | 1 |
| 9416 | 5.0 | 20.0 | 70.0 | 5.0 | 11.712 | O | 1 |
| 9417 | 4.0 | 21.0 | 70.0 | 5.0 | 11.294 | O | 1 |
| 9418 | 3.0 | 22.0 | 70.0 | 5.0 | 10.876 | O | 1 |
| 9419 | 2.0 | 23.0 | 70.0 | 5.0 | 10.458 | O | 1 |
| 9420 | 1.0 | 24.0 | 70.0 | 5.0 | 10.040 | O | 1 |
| 9421 | 0.0 | 25.0 | 70.0 | 5.0 | 9.623 | O | 1 |
| 9422 | 27.0 | 58.0 | 5.0 | 10.0 | 19.355 | X | 1 |
| 9423 | 26.1 | 58.9 | 5.0 | 10.0 | 19.034 | X | 1 |
| 9424 | 26.0 | 59.0 | 5.0 | 10.0 | 18.998 | O | 1 |
| 9425 | 20.0 | 65.0 | 5.0 | 10.0 | 16.857 | O | 1 |
| 9426 | 10.0 | 75.0 | 5.0 | 10.0 | 13.213 | O | 1 |
| 9427 | 9.0 | 76.0 | 5.0 | 10.0 | 12.795 | O | 1 |
| 9428 | 8.0 | 77.0 | 5.0 | 10.0 | 12.377 | O | 1 |
| 9429 | 7.0 | 78.0 | 5.0 | 10.0 | 11.959 | O | 1 |
| 9430 | 6.0 | 79.0 | 5.0 | 10.0 | 11.541 | O | 1 |
| 9431 | 5.0 | 80.0 | 5.0 | 10.0 | 11.124 | O | 1 |
| 9432 | 4.0 | 81.0 | 5.0 | 10.0 | 10.706 | O | 1 |
| 9433 | 3.0 | 82.0 | 5.0 | 10.0 | 10.288 | O | 1 |
| 9434 | 2.0 | 83.0 | 5.0 | 10.0 | 9.870 | O | 1 |
| 9435 | 1.0 | 84.0 | 5.0 | 10.0 | 9.452 | O | 1 |
| 9436 | 0.0 | 85.0 | 5.0 | 10.0 | 9.034 | O | 1 |
| 9437 | 27.0 | 53.0 | 10.0 | 10.0 | 19.355 | X | 1 |
| 9438 | 26.1 | 53.9 | 10.0 | 10.0 | 19.034 | X | 1 |
| 9439 | 26.0 | 54.0 | 10.0 | 10.0 | 18.998 | O | 1 |
| 9440 | 20.0 | 60.0 | 10.0 | 10.0 | 16.857 | O | 1 |
| 9441 | 10.0 | 70.0 | 10.0 | 10.0 | 13.224 | O | 1 |
| 9442 | 9.0 | 71.0 | 10.0 | 10.0 | 12.806 | O | 1 |
| 9443 | 8.0 | 72.0 | 10.0 | 10.0 | 12.388 | O | 1 |
| 9444 | 7.0 | 73.0 | 10.0 | 10.0 | 11.970 | O | 1 |
| 9445 | 6.0 | 74.0 | 10.0 | 10.0 | 11.552 | O | 1 |
| 9446 | 5.0 | 75.0 | 10.0 | 10.0 | 11.134 | O | 1 |
| 9447 | 4.0 | 76.0 | 10.0 | 10.0 | 10.716 | O | 1 |

[Table 171]

| 9448 | 3.0 | 77.0 | 10.0 | 10.0 | 10.298 | O | 1 |
|------|-----|------|------|------|--------|---|---|
| 9449 | 2.0 | 78.0 | 10.0 | 10.0 | 9.880 | O | 1 |
| 9450 | 1.0 | 79.0 | 10.0 | 10.0 | 9.462 | O | 1 |
| 9451 | 0.0 | 80.0 | 10.0 | 10.0 | 9.044 | O | 1 |
| 9452 | 27.0 | 48.0 | 15.0 | 10.0 | 19.355 | X | 1 |
| 9453 | 26.1 | 48.9 | 15.0 | 10.0 | 19.034 | X | 1 |
| 9454 | 26.0 | 49.0 | 15.0 | 10.0 | 18.999 | O | 1 |
| 9455 | 20.0 | 55.0 | 15.0 | 10.0 | 16.858 | O | 1 |
| 9456 | 10.0 | 65.0 | 15.0 | 10.0 | 13.234 | O | 1 |
| 9457 | 9.0 | 66.0 | 15.0 | 10.0 | 12.816 | O | 1 |
| 9458 | 8.0 | 67.0 | 15.0 | 10.0 | 12.398 | O | 1 |
| 9459 | 7.0 | 68.0 | 15.0 | 10.0 | 11.980 | O | 1 |
| 9460 | 6.0 | 69.0 | 15.0 | 10.0 | 11.562 | O | 1 |
| 9461 | 5.0 | 70.0 | 15.0 | 10.0 | 11.144 | O | 1 |
| 9462 | 4.0 | 71.0 | 15.0 | 10.0 | 10.727 | O | 1 |
| 9463 | 3.0 | 72.0 | 15.0 | 10.0 | 10.309 | O | 1 |
| 9464 | 2.0 | 73.0 | 15.0 | 10.0 | 9.891 | O | 1 |
| 9465 | 1.0 | 74.0 | 15.0 | 10.0 | 9.473 | O | 1 |
| 9466 | 0.0 | 75.0 | 15.0 | 10.0 | 9.055 | O | 1 |
| 9467 | 27.0 | 43.0 | 20.0 | 10.0 | 19.356 | X | 1 |
| 9468 | 26.1 | 43.9 | 20.0 | 10.0 | 19.035 | X | 1 |
| 9469 | 26.0 | 44.0 | 20.0 | 10.0 | 18.999 | O | 1 |
| 9470 | 20.0 | 50.0 | 20.0 | 10.0 | 16.858 | O | 1 |
| 9471 | 10.0 | 60.0 | 20.0 | 10.0 | 13.245 | O | 1 |
| 9472 | 9.0 | 61.0 | 20.0 | 10.0 | 12.827 | O | 1 |
| 9473 | 8.0 | 62.0 | 20.0 | 10.0 | 12.409 | O | 1 |
| 9474 | 7.0 | 63.0 | 20.0 | 10.0 | 11.991 | O | 1 |
| 9475 | 6.0 | 64.0 | 20.0 | 10.0 | 11.573 | O | 1 |
| 9476 | 5.0 | 65.0 | 20.0 | 10.0 | 11.155 | O | 1 |
| 9477 | 4.0 | 66.0 | 20.0 | 10.0 | 10.737 | O | 1 |
| 9478 | 3.0 | 67.0 | 20.0 | 10.0 | 10.319 | O | 1 |
| 9479 | 2.0 | 68.0 | 20.0 | 10.0 | 9.901 | O | 1 |
| 9480 | 1.0 | 69.0 | 20.0 | 10.0 | 9.483 | O | 1 |
| 9481 | 0.0 | 70.0 | 20.0 | 10.0 | 9.065 | O | 1 |
| 9482 | 27.0 | 38.0 | 25.0 | 10.0 | 19.356 | X | 1 |
| 9483 | 26.1 | 38.9 | 25.0 | 10.0 | 19.035 | X | 1 |
| 9484 | 26.0 | 39.0 | 25.0 | 10.0 | 18.999 | O | 1 |
| 9485 | 20.0 | 45.0 | 25.0 | 10.0 | 16.858 | O | 1 |
| 9486 | 10.0 | 55.0 | 25.0 | 10.0 | 13.255 | O | 1 |
| 9487 | 9.0 | 56.0 | 25.0 | 10.0 | 12.837 | O | 1 |
| 9488 | 8.0 | 57.0 | 25.0 | 10.0 | 12.419 | O | 1 |
| 9489 | 7.0 | 58.0 | 25.0 | 10.0 | 12.001 | O | 1 |
| 9490 | 6.0 | 59.0 | 25.0 | 10.0 | 11.583 | O | 1 |
| 9491 | 5.0 | 60.0 | 25.0 | 10.0 | 11.165 | O | 1 |
| 9492 | 4.0 | 61.0 | 25.0 | 10.0 | 10.747 | O | 1 |
| 9493 | 3.0 | 62.0 | 25.0 | 10.0 | 10.330 | O | 1 |
| 9494 | 2.0 | 63.0 | 25.0 | 10.0 | 9.912 | O | 1 |
| 9495 | 1.0 | 64.0 | 25.0 | 10.0 | 9.494 | O | 1 |
| 9496 | 0.0 | 65.0 | 25.0 | 10.0 | 9.076 | O | 1 |
| 9497 | 27.0 | 33.0 | 30.0 | 10.0 | 19.356 | X | 1 |

[Table 172]

| 9498 | 26.1 | 33.9 | 30.0 | 10.0 | 19.035 | X | 1 |
|---|---|---|---|---|---|---|---|
| 9499 | 26.0 | 34.0 | 30.0 | 10.0 | 18.999 | O | 1 |
| 9500 | 20.0 | 40.0 | 30.0 | 10.0 | 16.859 | O | 1 |
| 9501 | 10.0 | 50.0 | 30.0 | 10.0 | 13.265 | O | 1 |
| 9502 | 9.0 | 51.0 | 30.0 | 10.0 | 12.848 | O | 1 |
| 9503 | 8.0 | 52.0 | 30.0 | 10.0 | 12.430 | O | 1 |
| 9504 | 7.0 | 53.0 | 30.0 | 10.0 | 12.012 | O | 1 |
| 9505 | 6.0 | 54.0 | 30.0 | 10.0 | 11.594 | O | 1 |
| 9506 | 5.0 | 55.0 | 30.0 | 10.0 | 11.176 | O | 1 |
| 9507 | 4.0 | 56.0 | 30.0 | 10.0 | 10.758 | O | 1 |
| 9508 | 3.0 | 57.0 | 30.0 | 10.0 | 10.340 | O | 1 |
| 9509 | 2.0 | 58.0 | 30.0 | 10.0 | 9.922 | O | 1 |
| 9510 | 1.0 | 59.0 | 30.0 | 10.0 | 9.504 | O | 1 |
| 9511 | 0.0 | 60.0 | 30.0 | 10.0 | 9.086 | O | 1 |
| 9512 | 27.0 | 28.0 | 35.0 | 10.0 | 19.357 | X | 1 |
| 9513 | 26.1 | 28.9 | 35.0 | 10.0 | 19.035 | X | 1 |
| 9514 | 26.0 | 29.0 | 35.0 | 10.0 | 19.000 | O | 1 |
| 9515 | 20.0 | 35.0 | 35.0 | 10.0 | 16.859 | O | 1 |
| 9516 | 10.0 | 45.0 | 35.0 | 10.0 | 13.276 | O | 1 |
| 9517 | 9.0 | 46.0 | 35.0 | 10.0 | 12.858 | O | 1 |
| 9518 | 8.0 | 47.0 | 35.0 | 10.0 | 12.440 | O | 1 |
| 9519 | 7.0 | 48.0 | 35.0 | 10.0 | 12.022 | O | 1 |
| 9520 | 6.0 | 49.0 | 35.0 | 10.0 | 11.604 | O | 1 |
| 9521 | 5.0 | 50.0 | 35.0 | 10.0 | 11.186 | O | 1 |
| 9522 | 4.0 | 51.0 | 35.0 | 10.0 | 10.768 | O | 1 |
| 9523 | 3.0 | 52.0 | 35.0 | 10.0 | 10.350 | O | 1 |
| 9524 | 2.0 | 53.0 | 35.0 | 10.0 | 9.933 | O | 1 |
| 9525 | 1.0 | 54.0 | 35.0 | 10.0 | 9.515 | O | 1 |
| 9526 | 0.0 | 55.0 | 35.0 | 10.0 | 9.097 | O | 1 |
| 9527 | 26.0 | 24.0 | 40.0 | 10.0 | 19.000 | X | 1 |
| 9528 | 25.9 | 24.1 | 40.0 | 10.0 | 18.964 | O | 1 |
| 9529 | 25.0 | 25.0 | 40.0 | 10.0 | 18.643 | O | 1 |
| 9530 | 20.0 | 30.0 | 40.0 | 10.0 | 16.859 | O | 1 |
| 9531 | 10.0 | 40.0 | 40.0 | 10.0 | 13.286 | O | 1 |
| 9532 | 9.0 | 41.0 | 40.0 | 10.0 | 12.868 | O | 1 |
| 9533 | 8.0 | 42.0 | 40.0 | 10.0 | 12.450 | O | 1 |
| 9534 | 7.0 | 43.0 | 40.0 | 10.0 | 12.033 | O | 1 |
| 9535 | 6.0 | 44.0 | 40.0 | 10.0 | 11.615 | O | 1 |
| 9536 | 5.0 | 45.0 | 40.0 | 10.0 | 11.197 | O | 1 |
| 9537 | 4.0 | 46.0 | 40.0 | 10.0 | 10.779 | O | 1 |
| 9538 | 3.0 | 47.0 | 40.0 | 10.0 | 10.361 | O | 1 |
| 9539 | 2.0 | 48.0 | 40.0 | 10.0 | 9.943 | O | 1 |
| 9540 | 1.0 | 49.0 | 40.0 | 10.0 | 9.525 | O | 1 |
| 9541 | 0.0 | 50.0 | 40.0 | 10.0 | 9.107 | O | 1 |
| 9542 | 26.0 | 19.0 | 45.0 | 10.0 | 19.000 | X | 1 |
| 9543 | 25.9 | 19.1 | 45.0 | 10.0 | 18.965 | O | 1 |
| 9544 | 25.0 | 20.0 | 45.0 | 10.0 | 18.644 | O | 1 |
| 9545 | 20.0 | 25.0 | 45.0 | 10.0 | 16.859 | O | 1 |
| 9546 | 10.0 | 35.0 | 45.0 | 10.0 | 13.291 | O | 1 |
| 9547 | 9.0 | 36.0 | 45.0 | 10.0 | 12.879 | O | 1 |

[Table 173]

| 9548 | 8.0 | 37.0 | 45.0 | 10.0 | 12.461 | O | 1 |
|---|---|---|---|---|---|---|---|
| 9549 | 7.0 | 38.0 | 45.0 | 10.0 | 12.043 | O | 1 |
| 9550 | 6.0 | 39.0 | 45.0 | 10.0 | 11.625 | O | 1 |
| 9551 | 5.0 | 40.0 | 45.0 | 10.0 | 11.207 | O | 1 |
| 9552 | 4.0 | 41.0 | 45.0 | 10.0 | 10.789 | O | 1 |
| 9553 | 3.0 | 42.0 | 45.0 | 10.0 | 10.371 | O | 1 |
| 9554 | 2.0 | 43.0 | 45.0 | 10.0 | 9.953 | O | 1 |
| 9555 | 1.0 | 44.0 | 45.0 | 10.0 | 9.536 | O | 1 |
| 9556 | 0.0 | 45.0 | 45.0 | 10.0 | 9.118 | O | 1 |
| 9557 | 26.0 | 14.0 | 50.0 | 10.0 | 19.001 | X | 1 |
| 9558 | 25.9 | 14.1 | 50.0 | 10.0 | 18.965 | O | 1 |
| 9559 | 25.0 | 15.0 | 50.0 | 10.0 | 18.644 | O | 1 |
| 9560 | 20.0 | 20.0 | 50.0 | 10.0 | 16.860 | O | 1 |
| 9561 | 10.0 | 30.0 | 50.0 | 10.0 | 13.292 | O | 1 |
| 9562 | 9.0 | 31.0 | 50.0 | 10.0 | 12.889 | O | 1 |
| 9563 | 8.0 | 32.0 | 50.0 | 10.0 | 12.471 | O | 1 |
| 9564 | 7.0 | 33.0 | 50.0 | 10.0 | 12.053 | O | 1 |
| 9565 | 6.0 | 34.0 | 50.0 | 10.0 | 11.636 | O | 1 |
| 9566 | 5.0 | 35.0 | 50.0 | 10.0 | 11.218 | O | 1 |
| 9567 | 4.0 | 36.0 | 50.0 | 10.0 | 10.800 | O | 1 |
| 9568 | 3.0 | 37.0 | 50.0 | 10.0 | 10.382 | O | 1 |
| 9569 | 2.0 | 38.0 | 50.0 | 10.0 | 9.964 | O | 1 |
| 9570 | 1.0 | 39.0 | 50.0 | 10.0 | 9.546 | O | 1 |
| 9571 | 0.0 | 40.0 | 50.0 | 10.0 | 9.128 | O | 1 |
| 9572 | 26.0 | 9.0 | 55.0 | 10.0 | 19.001 | X | 1 |
| 9573 | 25.9 | 9.1 | 55.0 | 10.0 | 18.965 | O | 1 |
| 9574 | 25.0 | 10.0 | 55.0 | 10.0 | 18.644 | O | 1 |
| 9575 | 20.0 | 15.0 | 55.0 | 10.0 | 16.860 | O | 1 |
| 9576 | 10.0 | 25.0 | 55.0 | 10.0 | 13.292 | O | 1 |
| 9577 | 9.0 | 26.0 | 55.0 | 10.0 | 12.900 | O | 1 |
| 9578 | 8.0 | 27.0 | 55.0 | 10.0 | 12.482 | O | 1 |
| 9579 | 7.0 | 28.0 | 55.0 | 10.0 | 12.064 | O | 1 |
| 9580 | 6.0 | 29.0 | 55.0 | 10.0 | 11.646 | O | 1 |
| 9581 | 5.0 | 30.0 | 55.0 | 10.0 | 11.228 | O | 1 |
| 9582 | 4.0 | 31.0 | 55.0 | 10.0 | 10.810 | O | 1 |
| 9583 | 3.0 | 32.0 | 55.0 | 10.0 | 10.392 | O | 1 |
| 9584 | 2.0 | 33.0 | 55.0 | 10.0 | 9.974 | O | 1 |
| 9585 | 1.0 | 34.0 | 55.0 | 10.0 | 9.556 | O | 1 |
| 9586 | 0.0 | 35.0 | 55.0 | 10.0 | 9.139 | O | 1 |
| 9587 | 26.0 | 4.0 | 60.0 | 10.0 | 19.001 | X | 1 |
| 9588 | 25.9 | 4.1 | 60.0 | 10.0 | 18.966 | O | 1 |
| 9589 | 25.0 | 5.0 | 60.0 | 10.0 | 18.644 | O | 1 |
| 9590 | 20.0 | 10.0 | 60.0 | 10.0 | 16.860 | O | 1 |
| 9591 | 10.0 | 20.0 | 60.0 | 10.0 | 13.292 | O | 1 |
| 9592 | 9.0 | 21.0 | 60.0 | 10.0 | 12.910 | O | 1 |
| 9593 | 8.0 | 22.0 | 60.0 | 10.0 | 12.492 | O | 1 |
| 9594 | 7.0 | 23.0 | 60.0 | 10.0 | 12.074 | O | 1 |
| 9595 | 6.0 | 24.0 | 60.0 | 10.0 | 11.656 | O | 1 |
| 9596 | 5.0 | 25.0 | 60.0 | 10.0 | 11.239 | O | 1 |
| 9597 | 4.0 | 26.0 | 60.0 | 10.0 | 10.821 | O | 1 |

[Table 174]

| 9598 | 3.0 | 27.0 | 60.0 | 10.0 | 10.403 | O | 1 |
|---|---|---|---|---|---|---|---|
| 9599 | 2.0 | 28.0 | 60.0 | 10.0 | 9.985 | O | 1 |
| 9600 | 1.0 | 29.0 | 60.0 | 10.0 | 9.567 | O | 1 |
| 9601 | 0.0 | 30.0 | 60.0 | 10.0 | 9.149 | O | 1 |
| 9602 | 29.0 | 46.0 | 5.0 | 20.0 | 19.136 | X | 1 |
| 9603 | 28.7 | 46.3 | 5.0 | 20.0 | 19.029 | X | 1 |
| 9604 | 28.6 | 46.4 | 5.0 | 20.0 | 18.994 | O | 1 |
| 9605 | 28.0 | 47.0 | 5.0 | 20.0 | 18.779 | O | 1 |
| 9606 | 20.0 | 55.0 | 5.0 | 20.0 | 15.925 | O | 1 |
| 9607 | 10.0 | 65.0 | 5.0 | 20.0 | 12.308 | O | 1 |
| 9608 | 9.0 | 66.0 | 5.0 | 20.0 | 11.890 | O | 1 |
| 9609 | 8.0 | 67.0 | 5.0 | 20.0 | 11.472 | O | 1 |
| 9610 | 7.0 | 68.0 | 5.0 | 20.0 | 11.054 | O | 1 |
| 9611 | 6.0 | 69.0 | 5.0 | 20.0 | 10.636 | O | 1 |
| 9612 | 5.0 | 70.0 | 5.0 | 20.0 | 10.218 | O | 1 |
| 9613 | 4.0 | 71.0 | 5.0 | 20.0 | 9.800 | O | 1 |
| 9614 | 3.0 | 72.0 | 5.0 | 20.0 | 9.382 | O | 1 |
| 9615 | 2.0 | 73.0 | 5.0 | 20.0 | 8.965 | O | 1 |
| 9616 | 1.0 | 74.0 | 5.0 | 20.0 | 8.547 | O | 1 |
| 9617 | 0.0 | 75.0 | 5.0 | 20.0 | 8.129 | O | 1 |
| 9618 | 29.0 | 41.0 | 10.0 | 20.0 | 19.137 | X | 1 |
| 9619 | 28.7 | 41.3 | 10.0 | 20.0 | 19.029 | X | 1 |
| 9620 | 28.6 | 41.4 | 10.0 | 20.0 | 18.994 | O | 1 |
| 9621 | 28.0 | 42.0 | 10.0 | 20.0 | 18.780 | O | 1 |
| 9622 | 20.0 | 50.0 | 10.0 | 20.0 | 15.925 | O | 1 |
| 9623 | 10.0 | 60.0 | 10.0 | 20.0 | 12.318 | O | 1 |
| 9624 | 9.0 | 61.0 | 10.0 | 20.0 | 11.900 | O | 1 |
| 9625 | 8.0 | 62.0 | 10.0 | 20.0 | 11.483 | O | 1 |
| 9626 | 7.0 | 63.0 | 10.0 | 20.0 | 11.065 | O | 1 |
| 9627 | 6.0 | 64.0 | 10.0 | 20.0 | 10.647 | O | 1 |
| 9628 | 5.0 | 65.0 | 10.0 | 20.0 | 10.229 | O | 1 |
| 9629 | 4.0 | 66.0 | 10.0 | 20.0 | 9.811 | O | 1 |
| 9630 | 3.0 | 67.0 | 10.0 | 20.0 | 9.393 | O | 1 |
| 9631 | 2.0 | 68.0 | 10.0 | 20.0 | 8.975 | O | 1 |
| 9632 | 1.0 | 69.0 | 10.0 | 20.0 | 8.557 | O | 1 |
| 9633 | 0.0 | 70.0 | 10.0 | 20.0 | 8.139 | O | 1 |
| 9634 | 29.0 | 36.0 | 15.0 | 20.0 | 19.137 | X | 1 |
| 9635 | 28.7 | 36.3 | 15.0 | 20.0 | 19.030 | X | 1 |
| 9636 | 28.6 | 36.4 | 15.0 | 20.0 | 18.994 | O | 1 |
| 9637 | 28.0 | 37.0 | 15.0 | 20.0 | 18.780 | O | 1 |
| 9638 | 20.0 | 45.0 | 15.0 | 20.0 | 15.925 | O | 1 |
| 9639 | 10.0 | 55.0 | 15.0 | 20.0 | 12.329 | O | 1 |
| 9640 | 9.0 | 56.0 | 15.0 | 20.0 | 11.911 | O | 1 |
| 9641 | 8.0 | 57.0 | 15.0 | 20.0 | 11.493 | O | 1 |
| 9642 | 7.0 | 58.0 | 15.0 | 20.0 | 11.075 | O | 1 |
| 9643 | 6.0 | 59.0 | 15.0 | 20.0 | 10.657 | O | 1 |
| 9644 | 5.0 | 60.0 | 15.0 | 20.0 | 10.239 | O | 1 |
| 9645 | 4.0 | 61.0 | 15.0 | 20.0 | 9.821 | O | 1 |
| 9646 | 3.0 | 62.0 | 15.0 | 20.0 | 9.403 | O | 1 |
| 9647 | 2.0 | 63.0 | 15.0 | 20.0 | 8.985 | O | 1 |

[Table 175]

| 9648 | 1.0 | 64.0 | 15.0 | 20.0 | 8.568 | O | 1 |
|------|-----|------|------|------|-------|---|---|
| 9649 | 0.0 | 65.0 | 15.0 | 20.0 | 8.150 | O | 1 |
| 9650 | 29.0 | 31.0 | 20.0 | 20.0 | 19.137 | X | 1 |
| 9651 | 28.7 | 31.3 | 20.0 | 20.0 | 19.030 | X | 1 |
| 9652 | 28.6 | 31.4 | 20.0 | 20.0 | 18.994 | O | 1 |
| 9653 | 28.0 | 32.0 | 20.0 | 20.0 | 18.780 | O | 1 |
| 9654 | 20.0 | 40.0 | 20.0 | 20.0 | 15.926 | O | 1 |
| 9655 | 10.0 | 50.0 | 20.0 | 20.0 | 12.339 | O | 1 |
| 9656 | 9.0 | 51.0 | 20.0 | 20.0 | 11.921 | O | 1 |
| 9657 | 8.0 | 52.0 | 20.0 | 20.0 | 11.503 | O | 1 |
| 9658 | 7.0 | 53.0 | 20.0 | 20.0 | 11.086 | O | 1 |
| 9659 | 6.0 | 54.0 | 20.0 | 20.0 | 10.668 | O | 1 |
| 9660 | 5.0 | 55.0 | 20.0 | 20.0 | 10.250 | O | 1 |
| 9661 | 4.0 | 56.0 | 20.0 | 20.0 | 9.832 | O | 1 |
| 9662 | 3.0 | 57.0 | 20.0 | 20.0 | 9.414 | O | 1 |
| 9663 | 2.0 | 58.0 | 20.0 | 20.0 | 8.996 | O | 1 |
| 9664 | 1.0 | 59.0 | 20.0 | 20.0 | 8.578 | O | 1 |
| 9665 | 0.0 | 60.0 | 20.0 | 20.0 | 8.160 | O | 1 |
| 9666 | 29.0 | 26.0 | 25.0 | 20.0 | 19.137 | X | 1 |
| 9667 | 28.7 | 26.3 | 25.0 | 20.0 | 19.030 | X | 1 |
| 9668 | 28.6 | 26.4 | 25.0 | 20.0 | 18.995 | O | 1 |
| 9669 | 28.0 | 27.0 | 25.0 | 20.0 | 18.781 | O | 1 |
| 9670 | 20.0 | 35.0 | 25.0 | 20.0 | 15.926 | O | 1 |
| 9671 | 10.0 | 45.0 | 25.0 | 20.0 | 12.350 | O | 1 |
| 9672 | 9.0 | 46.0 | 25.0 | 20.0 | 11.932 | O | 1 |
| 9673 | 8.0 | 47.0 | 25.0 | 20.0 | 11.514 | O | 1 |
| 9674 | 7.0 | 48.0 | 25.0 | 20.0 | 11.096 | O | 1 |
| 9675 | 6.0 | 49.0 | 25.0 | 20.0 | 10.678 | O | 1 |
| 9676 | 5.0 | 50.0 | 25.0 | 20.0 | 10.260 | O | 1 |
| 9677 | 4.0 | 51.0 | 25.0 | 20.0 | 9.842 | O | 1 |
| 9678 | 3.0 | 52.0 | 25.0 | 20.0 | 9.424 | O | 1 |
| 9679 | 2.0 | 53.0 | 25.0 | 20.0 | 9.006 | O | 1 |
| 9680 | 1.0 | 54.0 | 25.0 | 20.0 | 8.588 | O | 1 |
| 9681 | 0.0 | 55.0 | 25.0 | 20.0 | 8.171 | O | 1 |
| 9682 | 29.0 | 21.0 | 30.0 | 20.0 | 19.138 | X | 1 |
| 9683 | 28.7 | 21.3 | 30.0 | 20.0 | 19.031 | X | 1 |
| 9684 | 28.6 | 21.4 | 30.0 | 20.0 | 18.995 | O | 1 |
| 9685 | 28.0 | 22.0 | 30.0 | 20.0 | 18.781 | O | 1 |
| 9686 | 20.0 | 30.0 | 30.0 | 20.0 | 15.926 | O | 1 |
| 9687 | 10.0 | 40.0 | 30.0 | 20.0 | 12.358 | O | 1 |
| 9688 | 9.0 | 41.0 | 30.0 | 20.0 | 11.942 | O | 1 |
| 9689 | 8.0 | 42.0 | 30.0 | 20.0 | 11.524 | O | 1 |
| 9690 | 7.0 | 43.0 | 30.0 | 20.0 | 11.106 | O | 1 |
| 9691 | 6.0 | 44.0 | 30.0 | 20.0 | 10.688 | O | 1 |
| 9692 | 5.0 | 45.0 | 30.0 | 20.0 | 10.271 | O | 1 |
| 9693 | 4.0 | 46.0 | 30.0 | 20.0 | 9.853 | O | 1 |
| 9694 | 3.0 | 47.0 | 30.0 | 20.0 | 9.435 | O | 1 |
| 9695 | 2.0 | 48.0 | 30.0 | 20.0 | 9.017 | O | 1 |
| 9696 | 1.0 | 49.0 | 30.0 | 20.0 | 8.599 | O | 1 |
| 9697 | 0.0 | 50.0 | 30.0 | 20.0 | 8.181 | O | 1 |

[Table 176]

| 9698 | 29.0 | 16.0 | 35.0 | 20.0 | 19.138 | X | 1 |
|---|---|---|---|---|---|---|---|
| 9699 | 28.7 | 16.3 | 35.0 | 20.0 | 19.031 | X | 1 |
| 9700 | 28.6 | 16.4 | 35.0 | 20.0 | 18.995 | O | 1 |
| 9701 | 28.0 | 17.0 | 35.0 | 20.0 | 18.781 | O | 1 |
| 9702 | 20.0 | 25.0 | 35.0 | 20.0 | 15.927 | O | 1 |
| 9703 | 10.0 | 35.0 | 35.0 | 20.0 | 12.359 | O | 1 |
| 9704 | 9.0 | 36.0 | 35.0 | 20.0 | 11.953 | O | 1 |
| 9705 | 8.0 | 37.0 | 35.0 | 20.0 | 11.535 | O | 1 |
| 9706 | 7.0 | 38.0 | 35.0 | 20.0 | 11.117 | O | 1 |
| 9707 | 6.0 | 39.0 | 35.0 | 20.0 | 10.699 | O | 1 |
| 9708 | 5.0 | 40.0 | 35.0 | 20.0 | 10.281 | O | 1 |
| 9709 | 4.0 | 41.0 | 35.0 | 20.0 | 9.863 | O | 1 |
| 9710 | 3.0 | 42.0 | 35.0 | 20.0 | 9.445 | O | 1 |
| 9711 | 2.0 | 43.0 | 35.0 | 20.0 | 9.027 | O | 1 |
| 9712 | 1.0 | 44.0 | 35.0 | 20.0 | 8.609 | O | 1 |
| 9713 | 0.0 | 45.0 | 35.0 | 20.0 | 8.191 | O | 1 |
| 9714 | 29.0 | 11.0 | 40.0 | 20.0 | 19.138 | X | 1 |
| 9715 | 28.7 | 11.3 | 40.0 | 20.0 | 19.031 | X | 1 |
| 9716 | 28.6 | 11.4 | 40.0 | 20.0 | 18.996 | O | 1 |
| 9717 | 28.0 | 12.0 | 40.0 | 20.0 | 18.781 | O | 1 |
| 9718 | 20.0 | 20.0 | 40.0 | 20.0 | 15.927 | O | 1 |
| 9719 | 10.0 | 30.0 | 40.0 | 20.0 | 12.359 | O | 1 |
| 9720 | 9.0 | 31.0 | 40.0 | 20.0 | 11.963 | O | 1 |
| 9721 | 8.0 | 32.0 | 40.0 | 20.0 | 11.545 | O | 1 |
| 9722 | 7.0 | 33.0 | 40.0 | 20.0 | 11.127 | O | 1 |
| 9723 | 6.0 | 34.0 | 40.0 | 20.0 | 10.709 | O | 1 |
| 9724 | 5.0 | 35.0 | 40.0 | 20.0 | 10.291 | O | 1 |
| 9725 | 4.0 | 36.0 | 40.0 | 20.0 | 9.874 | O | 1 |
| 9726 | 3.0 | 37.0 | 40.0 | 20.0 | 9.456 | O | 1 |
| 9727 | 2.0 | 38.0 | 40.0 | 20.0 | 9.038 | O | 1 |
| 9728 | 1.0 | 39.0 | 40.0 | 20.0 | 8.620 | O | 1 |
| 9729 | 0.0 | 40.0 | 40.0 | 20.0 | 8.202 | O | 1 |
| 9730 | 29.0 | 6.0 | 45.0 | 20.0 | 19.139 | X | 1 |
| 9731 | 28.7 | 6.3 | 45.0 | 20.0 | 19.032 | X | 1 |
| 9732 | 28.6 | 6.4 | 45.0 | 20.0 | 18.996 | O | 1 |
| 9733 | 28.0 | 7.0 | 45.0 | 20.0 | 18.782 | O | 1 |
| 9734 | 20.0 | 15.0 | 45.0 | 20.0 | 15.927 | O | 1 |
| 9735 | 10.0 | 25.0 | 45.0 | 20.0 | 12.359 | O | 1 |
| 9736 | 9.0 | 26.0 | 45.0 | 20.0 | 11.974 | O | 1 |
| 9737 | 8.0 | 27.0 | 45.0 | 20.0 | 11.556 | O | 1 |
| 9738 | 7.0 | 28.0 | 45.0 | 20.0 | 11.138 | O | 1 |
| 9739 | 6.0 | 29.0 | 45.0 | 20.0 | 10.720 | O | 1 |
| 9740 | 5.0 | 30.0 | 45.0 | 20.0 | 10.302 | O | 1 |
| 9741 | 4.0 | 31.0 | 45.0 | 20.0 | 9.884 | O | 1 |
| 9742 | 3.0 | 32.0 | 45.0 | 20.0 | 9.466 | O | 1 |
| 9743 | 2.0 | 33.0 | 45.0 | 20.0 | 9.048 | O | 1 |
| 9744 | 1.0 | 34.0 | 45.0 | 20.0 | 8.630 | O | 1 |
| 9745 | 0.0 | 35.0 | 45.0 | 20.0 | 8.212 | O | 1 |
| 9746 | 29.0 | 1.0 | 50.0 | 20.0 | 19.139 | X | 1 |
| 9747 | 28.7 | 1.3 | 50.0 | 20.0 | 19.032 | X | 1 |

[Table 177]

| 9748 | 28.6 | 1.4 | 50.0 | 20.0 | 18.996 | O | 1 |
|------|------|------|------|------|--------|---|---|
| 9749 | 28.0 | 2.0 | 50.0 | 20.0 | 18.782 | O | 1 |
| 9750 | 20.0 | 10.0 | 50.0 | 20.0 | 15.928 | O | 1 |
| 9751 | 10.0 | 20.0 | 50.0 | 20.0 | 12.359 | O | 1 |
| 9752 | 9.0 | 21.0 | 50.0 | 20.0 | 11.984 | O | 1 |
| 9753 | 8.0 | 22.0 | 50.0 | 20.0 | 11.566 | O | 1 |
| 9754 | 7.0 | 23.0 | 50.0 | 20.0 | 11.148 | O | 1 |
| 9755 | 6.0 | 24.0 | 50.0 | 20.0 | 10.730 | O | 1 |
| 9756 | 5.0 | 25.0 | 50.0 | 20.0 | 10.312 | O | 1 |
| 9757 | 4.0 | 26.0 | 50.0 | 20.0 | 9.894 | O | 1 |
| 9758 | 3.0 | 27.0 | 50.0 | 20.0 | 9.477 | O | 1 |
| 9759 | 2.0 | 28.0 | 50.0 | 20.0 | 9.059 | O | 1 |
| 9760 | 1.0 | 29.0 | 50.0 | 20.0 | 8.641 | O | 1 |
| 9761 | 0.0 | 30.0 | 50.0 | 20.0 | 8.223 | O | 1 |
| 9762 | 32.0 | 33.0 | 5.0 | 30.0 | 19.274 | X | 1 |
| 9763 | 31.3 | 33.7 | 5.0 | 30.0 | 19.025 | X | 1 |
| 9764 | 31.2 | 33.8 | 5.0 | 30.0 | 18.989 | O | 1 |
| 9765 | 31.0 | 34.0 | 5.0 | 30.0 | 18.918 | O | 1 |
| 9766 | 30.0 | 35.0 | 5.0 | 30.0 | 18.561 | O | 1 |
| 9767 | 20.0 | 45.0 | 5.0 | 30.0 | 14.993 | O | 1 |
| 9768 | 10.0 | 55.0 | 5.0 | 30.0 | 11.403 | O | 1 |
| 9769 | 9.0 | 56.0 | 5.0 | 30.0 | 10.985 | O | 1 |
| 9770 | 8.0 | 57.0 | 5.0 | 30.0 | 10.567 | O | 1 |
| 9771 | 7.0 | 58.0 | 5.0 | 30.0 | 10.149 | O | 1 |
| 9772 | 6.0 | 59.0 | 5.0 | 30.0 | 9.731 | O | 1 |
| 9773 | 5.0 | 60.0 | 5.0 | 30.0 | 9.313 | O | 1 |
| 9774 | 4.0 | 61.0 | 5.0 | 30.0 | 8.895 | O | 1 |
| 9775 | 3.0 | 62.0 | 5.0 | 30.0 | 8.477 | O | 1 |
| 9776 | 2.0 | 63.0 | 5.0 | 30.0 | 8.059 | O | 1 |
| 9777 | 1.0 | 64.0 | 5.0 | 30.0 | 7.641 | O | 1 |
| 9778 | 0.0 | 65.0 | 5.0 | 30.0 | 7.223 | O | 1 |
| 9779 | 32.0 | 28.0 | 10.0 | 30.0 | 19.275 | X | 1 |
| 9780 | 31.3 | 28.7 | 10.0 | 30.0 | 19.025 | X | 1 |
| 9781 | 31.2 | 28.8 | 10.0 | 30.0 | 18.989 | O | 1 |
| 9782 | 31.0 | 29.0 | 10.0 | 30.0 | 18.918 | O | 1 |
| 9783 | 30.0 | 30.0 | 10.0 | 30.0 | 18.561 | O | 1 |
| 9784 | 20.0 | 40.0 | 10.0 | 30.0 | 14.993 | O | 1 |
| 9785 | 10.0 | 50.0 | 10.0 | 30.0 | 11.413 | O | 1 |
| 9786 | 9.0 | 51.0 | 10.0 | 30.0 | 10.995 | O | 1 |
| 9787 | 8.0 | 52.0 | 10.0 | 30.0 | 10.577 | O | 1 |
| 9788 | 7.0 | 53.0 | 10.0 | 30.0 | 10.159 | O | 1 |
| 9789 | 6.0 | 54.0 | 10.0 | 30.0 | 9.741 | O | 1 |
| 9790 | 5.0 | 55.0 | 10.0 | 30.0 | 9.324 | O | 1 |
| 9791 | 4.0 | 56.0 | 10.0 | 30.0 | 8.906 | O | 1 |
| 9792 | 3.0 | 57.0 | 10.0 | 30.0 | 8.488 | O | 1 |
| 9793 | 2.0 | 58.0 | 10.0 | 30.0 | 8.070 | O | 1 |
| 9794 | 1.0 | 59.0 | 10.0 | 30.0 | 7.652 | O | 1 |
| 9795 | 0.0 | 60.0 | 10.0 | 30.0 | 7.234 | O | 1 |
| 9796 | 32.0 | 23.0 | 15.0 | 30.0 | 19.275 | X | 1 |
| 9797 | 31.3 | 23.7 | 15.0 | 30.0 | 19.025 | X | 1 |

[Table 178]

| 9798 | 31.2 | 23.8 | 15.0 | 30.0 | 18.990 | O | 1 |
|------|------|------|------|------|--------|---|---|
| 9799 | 31.0 | 24.0 | 15.0 | 30.0 | 18.918 | O | 1 |
| 9800 | 30.0 | 25.0 | 15.0 | 30.0 | 18.561 | O | 1 |
| 9801 | 20.0 | 35.0 | 15.0 | 30.0 | 14.993 | O | 1 |
| 9802 | 10.0 | 45.0 | 15.0 | 30.0 | 11.424 | O | 1 |
| 9803 | 9.0 | 46.0 | 15.0 | 30.0 | 11.006 | O | 1 |
| 9804 | 8.0 | 47.0 | 15.0 | 30.0 | 10.588 | O | 1 |
| 9805 | 7.0 | 48.0 | 15.0 | 30.0 | 10.170 | O | 1 |
| 9806 | 6.0 | 49.0 | 15.0 | 30.0 | 9.752 | O | 1 |
| 9807 | 5.0 | 50.0 | 15.0 | 30.0 | 9.334 | O | 1 |
| 9808 | 4.0 | 51.0 | 15.0 | 30.0 | 8.916 | O | 1 |
| 9809 | 3.0 | 52.0 | 15.0 | 30.0 | 8.498 | O | 1 |
| 9810 | 2.0 | 53.0 | 15.0 | 30.0 | 8.080 | O | 1 |
| 9811 | 1.0 | 54.0 | 15.0 | 30.0 | 7.662 | O | 1 |
| 9812 | 0.0 | 55.0 | 15.0 | 30.0 | 7.244 | O | 1 |
| 9813 | 32.0 | 18.0 | 20.0 | 30.0 | 19.275 | X | 1 |
| 9814 | 31.3 | 18.7 | 20.0 | 30.0 | 19.026 | X | 1 |
| 9815 | 31.2 | 18.8 | 20.0 | 30.0 | 18.990 | O | 1 |
| 9816 | 31.0 | 19.0 | 20.0 | 30.0 | 18.919 | O | 1 |
| 9817 | 30.0 | 20.0 | 20.0 | 30.0 | 18.562 | O | 1 |
| 9818 | 20.0 | 30.0 | 20.0 | 30.0 | 14.994 | O | 1 |
| 9819 | 10.0 | 40.0 | 20.0 | 30.0 | 11.425 | O | 1 |
| 9820 | 9.0 | 41.0 | 20.0 | 30.0 | 11.016 | O | 1 |
| 9821 | 8.0 | 42.0 | 20.0 | 30.0 | 10.598 | O | 1 |
| 9822 | 7.0 | 43.0 | 20.0 | 30.0 | 10.180 | O | 1 |
| 9823 | 6.0 | 44.0 | 20.0 | 30.0 | 9.762 | O | 1 |
| 9824 | 5.0 | 45.0 | 20.0 | 30.0 | 9.344 | O | 1 |
| 9825 | 4.0 | 46.0 | 20.0 | 30.0 | 8.926 | O | 1 |
| 9826 | 3.0 | 47.0 | 20.0 | 30.0 | 8.509 | O | 1 |
| 9827 | 2.0 | 48.0 | 20.0 | 30.0 | 8.091 | O | 1 |
| 9828 | 1.0 | 49.0 | 20.0 | 30.0 | 7.673 | O | 1 |
| 9829 | 0.0 | 50.0 | 20.0 | 30.0 | 7.255 | O | 1 |
| 9830 | 32.0 | 13.0 | 25.0 | 30.0 | 19.276 | X | 1 |
| 9831 | 31.3 | 13.7 | 25.0 | 30.0 | 19.026 | X | 1 |
| 9832 | 31.2 | 13.8 | 25.0 | 30.0 | 18.990 | O | 1 |
| 9833 | 31.0 | 14.0 | 25.0 | 30.0 | 18.919 | O | 1 |
| 9834 | 30.0 | 15.0 | 25.0 | 30.0 | 18.562 | O | 1 |
| 9835 | 20.0 | 25.0 | 25.0 | 30.0 | 14.994 | O | 1 |
| 9836 | 10.0 | 35.0 | 25.0 | 30.0 | 11.426 | O | 1 |
| 9837 | 9.0 | 36.0 | 25.0 | 30.0 | 11.027 | O | 1 |
| 9838 | 8.0 | 37.0 | 25.0 | 30.0 | 10.609 | O | 1 |
| 9839 | 7.0 | 38.0 | 25.0 | 30.0 | 10.191 | O | 1 |
| 9840 | 6.0 | 39.0 | 25.0 | 30.0 | 9.773 | O | 1 |
| 9841 | 5.0 | 40.0 | 25.0 | 30.0 | 9.355 | O | 1 |
| 9842 | 4.0 | 41.0 | 25.0 | 30.0 | 8.937 | O | 1 |
| 9843 | 3.0 | 42.0 | 25.0 | 30.0 | 8.519 | O | 1 |
| 9844 | 2.0 | 43.0 | 25.0 | 30.0 | 8.101 | O | 1 |
| 9845 | 1.0 | 44.0 | 25.0 | 30.0 | 7.683 | O | 1 |
| 9846 | 0.0 | 45.0 | 25.0 | 30.0 | 7.265 | O | 1 |
| 9847 | 32.0 | 8.0 | 30.0 | 30.0 | 19.276 | X | 1 |

[Table 179]

| | | | | | | | |
|---|---|---|---|---|---|---|---|
| 9848 | 31.3 | 8.7 | 30.0 | 30.0 | 19.026 | X | 1 |
| 9849 | 31.2 | 8.8 | 30.0 | 30.0 | 18.990 | O | 1 |
| 9850 | 31.0 | 9.0 | 30.0 | 30.0 | 18.919 | O | 1 |
| 9851 | 30.0 | 10.0 | 30.0 | 30.0 | 18.562 | O | 1 |
| 9852 | 20.0 | 20.0 | 30.0 | 30.0 | 14.994 | O | 1 |
| 9853 | 10.0 | 30.0 | 30.0 | 30.0 | 11.426 | O | 1 |
| 9854 | 9.0 | 31.0 | 30.0 | 30.0 | 11.037 | O | 1 |
| 9855 | 8.0 | 32.0 | 30.0 | 30.0 | 10.619 | O | 1 |
| 9856 | 7.0 | 33.0 | 30.0 | 30.0 | 10.201 | O | 1 |
| 9857 | 6.0 | 34.0 | 30.0 | 30.0 | 9.783 | O | 1 |
| 9858 | 5.0 | 35.0 | 30.0 | 30.0 | 9.365 | O | 1 |
| 9859 | 4.0 | 36.0 | 30.0 | 30.0 | 8.947 | O | 1 |
| 9860 | 3.0 | 37.0 | 30.0 | 30.0 | 8.529 | O | 1 |
| 9861 | 2.0 | 38.0 | 30.0 | 30.0 | 8.112 | O | 1 |
| 9862 | 1.0 | 39.0 | 30.0 | 30.0 | 7.694 | O | 1 |
| 9863 | 0.0 | 40.0 | 30.0 | 30.0 | 7.276 | O | 1 |
| 9864 | 32.0 | 3.0 | 35.0 | 30.0 | 19.276 | X | 1 |
| 9865 | 31.3 | 3.7 | 35.0 | 30.0 | 19.026 | X | 1 |
| 9866 | 31.2 | 3.8 | 35.0 | 30.0 | 18.991 | O | 1 |
| 9867 | 31.0 | 4.0 | 35.0 | 30.0 | 18.919 | O | 1 |
| 9868 | 30.0 | 5.0 | 35.0 | 30.0 | 18.563 | O | 1 |
| 9869 | 20.0 | 15.0 | 35.0 | 30.0 | 14.994 | O | 1 |
| 9870 | 10.0 | 25.0 | 35.0 | 30.0 | 11.426 | O | 1 |
| 9871 | 9.0 | 26.0 | 35.0 | 30.0 | 11.047 | O | 1 |
| 9872 | 8.0 | 27.0 | 35.0 | 30.0 | 10.630 | O | 1 |
| 9873 | 7.0 | 28.0 | 35.0 | 30.0 | 10.212 | O | 1 |
| 9874 | 6.0 | 29.0 | 35.0 | 30.0 | 9.794 | O | 1 |
| 9875 | 5.0 | 30.0 | 35.0 | 30.0 | 9.376 | O | 1 |
| 9876 | 4.0 | 31.0 | 35.0 | 30.0 | 8.958 | O | 1 |
| 9877 | 3.0 | 32.0 | 35.0 | 30.0 | 8.540 | O | 1 |
| 9878 | 2.0 | 33.0 | 35.0 | 30.0 | 8.122 | O | 1 |
| 9879 | 1.0 | 34.0 | 35.0 | 30.0 | 7.704 | O | 1 |
| 9880 | 0.0 | 35.0 | 35.0 | 30.0 | 7.286 | O | 1 |
| 9881 | 34.0 | 21.0 | 5.0 | 40.0 | 19.056 | X | 1 |
| 9882 | 33.9 | 21.1 | 5.0 | 40.0 | 19.020 | X | 1 |
| 9883 | 33.8 | 21.2 | 5.0 | 40.0 | 18.985 | O | 1 |
| 9884 | 33.0 | 22.0 | 5.0 | 40.0 | 18.699 | O | 1 |
| 9885 | 30.0 | 25.0 | 5.0 | 40.0 | 17.629 | O | 1 |
| 9886 | 20.0 | 35.0 | 5.0 | 40.0 | 14.061 | O | 1 |
| 9887 | 10.0 | 45.0 | 5.0 | 40.0 | 10.492 | O | 1 |
| 9888 | 9.0 | 46.0 | 5.0 | 40.0 | 10.079 | O | 1 |
| 9889 | 8.0 | 47.0 | 5.0 | 40.0 | 9.662 | O | 1 |
| 9890 | 7.0 | 48.0 | 5.0 | 40.0 | 9.244 | O | 1 |
| 9891 | 6.0 | 49.0 | 5.0 | 40.0 | 8.826 | O | 1 |
| 9892 | 5.0 | 50.0 | 5.0 | 40.0 | 8.408 | O | 1 |
| 9893 | 4.0 | 51.0 | 5.0 | 40.0 | 7.990 | O | 1 |
| 9894 | 3.0 | 52.0 | 5.0 | 40.0 | 7.572 | O | 1 |
| 9895 | 2.0 | 53.0 | 5.0 | 40.0 | 7.154 | O | 1 |
| 9896 | 1.0 | 54.0 | 5.0 | 40.0 | 6.736 | O | 1 |
| 9897 | 0.0 | 55.0 | 5.0 | 40.0 | 6.318 | O | 1 |

[Table 180]

| 9898 | 34.0 | 16.0 | 10.0 | 40.0 | 19.056 | X | 1 |
|------|------|------|------|------|--------|---|---|
| 9899 | 33.9 | 16.1 | 10.0 | 40.0 | 19.021 | X | 1 |
| 9900 | 33.8 | 16.2 | 10.0 | 40.0 | 18.985 | O | 1 |
| 9901 | 33.0 | 17.0 | 10.0 | 40.0 | 18.699 | O | 1 |
| 9902 | 30.0 | 20.0 | 10.0 | 40.0 | 17.629 | O | 1 |
| 9903 | 20.0 | 30.0 | 10.0 | 40.0 | 14.061 | O | 1 |
| 9904 | 10.0 | 40.0 | 10.0 | 40.0 | 10.493 | O | 1 |
| 9905 | 9.0 | 41.0 | 10.0 | 40.0 | 10.090 | O | 1 |
| 9906 | 8.0 | 42.0 | 10.0 | 40.0 | 9.672 | O | 1 |
| 9907 | 7.0 | 43.0 | 10.0 | 40.0 | 9.254 | O | 1 |
| 9908 | 6.0 | 44.0 | 10.0 | 40.0 | 8.836 | O | 1 |
| 9909 | 5.0 | 45.0 | 10.0 | 40.0 | 8.418 | O | 1 |
| 9910 | 4.0 | 46.0 | 10.0 | 40.0 | 8.000 | O | 1 |
| 9911 | 3.0 | 47.0 | 10.0 | 40.0 | 7.582 | O | 1 |
| 9912 | 2.0 | 48.0 | 10.0 | 40.0 | 7.164 | O | 1 |
| 9913 | 1.0 | 49.0 | 10.0 | 40.0 | 6.747 | O | 1 |
| 9914 | 0.0 | 50.0 | 10.0 | 40.0 | 6.329 | O | 1 |
| 9915 | 34.0 | 11.0 | 15.0 | 40.0 | 19.057 | X | 1 |
| 9916 | 33.9 | 11.1 | 15.0 | 40.0 | 19.021 | X | 1 |
| 9917 | 33.8 | 11.2 | 15.0 | 40.0 | 18.985 | O | 1 |
| 9918 | 33.0 | 12.0 | 15.0 | 40.0 | 18.700 | O | 1 |
| 9919 | 30.0 | 15.0 | 15.0 | 40.0 | 17.629 | O | 1 |
| 9920 | 20.0 | 25.0 | 15.0 | 40.0 | 14.061 | O | 1 |
| 9921 | 10.0 | 35.0 | 15.0 | 40.0 | 10.493 | O | 1 |
| 9922 | 9.0 | 36.0 | 15.0 | 40.0 | 10.100 | O | 1 |
| 9923 | 8.0 | 37.0 | 15.0 | 40.0 | 9.682 | O | 1 |
| 9924 | 7.0 | 38.0 | 15.0 | 40.0 | 9.265 | O | 1 |
| 9925 | 6.0 | 39.0 | 15.0 | 40.0 | 8.847 | O | 1 |
| 9926 | 5.0 | 40.0 | 15.0 | 40.0 | 8.429 | O | 1 |
| 9927 | 4.0 | 41.0 | 15.0 | 40.0 | 8.011 | O | 1 |
| 9928 | 3.0 | 42.0 | 15.0 | 40.0 | 7.593 | O | 1 |
| 9929 | 2.0 | 43.0 | 15.0 | 40.0 | 7.175 | O | 1 |
| 9930 | 1.0 | 44.0 | 15.0 | 40.0 | 6.757 | O | 1 |
| 9931 | 0.0 | 45.0 | 15.0 | 40.0 | 6.339 | O | 1 |
| 9932 | 34.0 | 6.0 | 20.0 | 40.0 | 19.057 | X | 1 |
| 9933 | 33.9 | 6.1 | 20.0 | 40.0 | 19.021 | X | 1 |
| 9934 | 33.8 | 6.2 | 20.0 | 40.0 | 18.985 | O | 1 |
| 9935 | 33.0 | 7.0 | 20.0 | 40.0 | 18.700 | O | 1 |
| 9936 | 30.0 | 10.0 | 20.0 | 40.0 | 17.630 | O | 1 |
| 9937 | 20.0 | 20.0 | 20.0 | 40.0 | 14.061 | O | 1 |
| 9938 | 10.0 | 30.0 | 20.0 | 40.0 | 10.493 | O | 1 |
| 9939 | 9.0 | 31.0 | 20.0 | 40.0 | 10.111 | O | 1 |
| 9940 | 8.0 | 32.0 | 20.0 | 40.0 | 9.693 | O | 1 |
| 9941 | 7.0 | 33.0 | 20.0 | 40.0 | 9.275 | O | 1 |
| 9942 | 6.0 | 34.0 | 20.0 | 40.0 | 8.857 | O | 1 |
| 9943 | 5.0 | 35.0 | 20.0 | 40.0 | 8.439 | O | 1 |
| 9944 | 4.0 | 36.0 | 20.0 | 40.0 | 8.021 | O | 1 |
| 9945 | 3.0 | 37.0 | 20.0 | 40.0 | 7.603 | O | 1 |
| 9946 | 2.0 | 38.0 | 20.0 | 40.0 | 7.185 | O | 1 |
| 9947 | 1.0 | 39.0 | 20.0 | 40.0 | 6.767 | O | 1 |

[Table 181]

| 9948 | 0.0 | 40.0 | 20.0 | 40.0 | 6.350 | O | 1 |
|---|---|---|---|---|---|---|---|
| 9949 | 34.0 | 1.0 | 25.0 | 40.0 | 19.057 | X | 1 |
| 9950 | 33.9 | 1.1 | 25.0 | 40.0 | 19.021 | X | 1 |
| 9951 | 33.8 | 1.2 | 25.0 | 40.0 | 18.986 | O | 1 |
| 9952 | 33.0 | 2.0 | 25.0 | 40.0 | 18.700 | O | 1 |
| 9953 | 30.0 | 5.0 | 25.0 | 40.0 | 17.630 | O | 1 |
| 9954 | 20.0 | 15.0 | 25.0 | 40.0 | 14.062 | O | 1 |
| 9955 | 10.0 | 25.0 | 25.0 | 40.0 | 10.494 | O | 1 |
| 9956 | 9.0 | 26.0 | 25.0 | 40.0 | 10.121 | O | 1 |
| 9957 | 8.0 | 27.0 | 25.0 | 40.0 | 9.703 | O | 1 |
| 9958 | 7.0 | 28.0 | 25.0 | 40.0 | 9.285 | O | 1 |
| 9959 | 6.0 | 29.0 | 25.0 | 40.0 | 8.868 | O | 1 |
| 9960 | 5.0 | 30.0 | 25.0 | 40.0 | 8.450 | O | 1 |
| 9961 | 4.0 | 31.0 | 25.0 | 40.0 | 8.032 | O | 1 |
| 9962 | 3.0 | 32.0 | 25.0 | 40.0 | 7.614 | O | 1 |
| 9963 | 2.0 | 33.0 | 25.0 | 40.0 | 7.196 | O | 1 |
| 9964 | 1.0 | 34.0 | 25.0 | 40.0 | 6.778 | O | 1 |
| 9965 | 0.0 | 35.0 | 25.0 | 40.0 | 6.360 | O | 1 |
| 9966 | 37.0 | 8.0 | 5.0 | 50.0 | 19.194 | X | 1 |
| 9967 | 36.5 | 8.5 | 5.0 | 50.0 | 19.016 | X | 1 |
| 9968 | 36.4 | 8.6 | 5.0 | 50.0 | 18.980 | O | 1 |
| 9969 | 36.0 | 9.0 | 5.0 | 50.0 | 18.837 | O | 1 |
| 9970 | 30.0 | 15.0 | 5.0 | 50.0 | 16.696 | O | 1 |
| 9971 | 20.0 | 25.0 | 5.0 | 50.0 | 13.128 | O | 1 |
| 9972 | 10.0 | 35.0 | 5.0 | 50.0 | 9.560 | O | 1 |
| 9973 | 9.0 | 36.0 | 5.0 | 50.0 | 9.174 | O | 1 |
| 9974 | 8.0 | 37.0 | 5.0 | 50.0 | 8.756 | O | 1 |
| 9975 | 7.0 | 38.0 | 5.0 | 50.0 | 8.338 | O | 1 |
| 9976 | 6.0 | 39.0 | 5.0 | 50.0 | 7.920 | O | 1 |
| 9977 | 5.0 | 40.0 | 5.0 | 50.0 | 7.503 | O | 1 |
| 9978 | 4.0 | 41.0 | 5.0 | 50.0 | 7.085 | O | 1 |
| 9979 | 3.0 | 42.0 | 5.0 | 50.0 | 6.667 | O | 1 |
| 9980 | 2.0 | 43.0 | 5.0 | 50.0 | 6.249 | O | 1 |
| 9981 | 1.0 | 44.0 | 5.0 | 50.0 | 5.831 | O | 1 |
| 9982 | 0.0 | 45.0 | 5.0 | 50.0 | 5.413 | O | 1 |
| 9983 | 37.0 | 3.0 | 10.0 | 50.0 | 19.194 | X | 1 |
| 9984 | 36.5 | 3.5 | 10.0 | 50.0 | 19.016 | X | 1 |
| 9985 | 36.4 | 3.6 | 10.0 | 50.0 | 18.980 | O | 1 |
| 9986 | 36.0 | 4.0 | 10.0 | 50.0 | 18.838 | O | 1 |
| 9987 | 30.0 | 10.0 | 10.0 | 50.0 | 16.697 | O | 1 |
| 9988 | 20.0 | 20.0 | 10.0 | 50.0 | 13.129 | O | 1 |
| 9989 | 10.0 | 30.0 | 10.0 | 50.0 | 9.560 | O | 1 |
| 9990 | 9.0 | 31.0 | 10.0 | 50.0 | 9.185 | O | 1 |
| 9991 | 8.0 | 32.0 | 10.0 | 50.0 | 8.767 | O | 1 |
| 9992 | 7.0 | 33.0 | 10.0 | 50.0 | 8.349 | O | 1 |
| 9993 | 6.0 | 34.0 | 10.0 | 50.0 | 7.931 | O | 1 |
| 9994 | 5.0 | 35.0 | 10.0 | 50.0 | 7.513 | O | 1 |
| 9995 | 4.0 | 36.0 | 10.0 | 50.0 | 7.095 | O | 1 |
| 9996 | 3.0 | 37.0 | 10.0 | 50.0 | 6.677 | O | 1 |
| 9997 | 2.0 | 38.0 | 10.0 | 50.0 | 6.259 | O | 1 |
| 9998 | 1.0 | 39.0 | 10.0 | 50.0 | 5.841 | O | 1 |
| 9999 | 0.0 | 40.0 | 10.0 | 50.0 | 5.423 | O | 1 |

Tables 182 to 191 show the composition, combustion heat amount, and GWP of the working medium of a four-component system of propane, HFO-1123, HFC-32, and $CO_2$.

[Table 182]

| Case | propane | HFO-1123 | HFC-32 | $CO_2$ | Heat of Combustion | Evaluation | GWP |
|---|---|---|---|---|---|---|---|
| 10000 | 25.0 | 71.0 | 2.0 | 2.0 | 19.338 | X | 15 |
| 10001 | 24.1 | 71.9 | 2.0 | 2.0 | 19.017 | X | 15 |
| 10002 | 24.0 | 72.0 | 2.0 | 2.0 | 18.981 | O | 15 |
| 10003 | 20.0 | 76.0 | 2.0 | 2.0 | 17.554 | O | 15 |
| 10004 | 10.0 | 86.0 | 2.0 | 2.0 | 13.902 | O | 15 |
| 10005 | 9.0 | 87.0 | 2.0 | 2.0 | 13.484 | O | 15 |
| 10006 | 8.0 | 88.0 | 2.0 | 2.0 | 13.066 | O | 15 |
| 10007 | 7.0 | 89.0 | 2.0 | 2.0 | 12.648 | O | 15 |
| 10008 | 6.0 | 90.0 | 2.0 | 2.0 | 12.230 | O | 15 |
| 10009 | 5.0 | 91.0 | 2.0 | 2.0 | 11.812 | O | 15 |
| 10010 | 4.0 | 92.0 | 2.0 | 2.0 | 11.394 | O | 15 |
| 10011 | 3.0 | 93.0 | 2.0 | 2.0 | 10.976 | O | 15 |
| 10012 | 2.0 | 94.0 | 2.0 | 2.0 | 10.558 | O | 15 |
| 10013 | 1.0 | 95.0 | 2.0 | 2.0 | 10.141 | O | 15 |
| 10014 | 0.0 | 96.0 | 2.0 | 2.0 | 9.723 | O | 15 |
| 10015 | 25.0 | 68.0 | 5.0 | 2.0 | 19.305 | X | 35 |
| 10016 | 24.2 | 68.8 | 5.0 | 2.0 | 19.019 | X | 35 |
| 10017 | 24.1 | 68.9 | 5.0 | 2.0 | 18.984 | O | 35 |
| 10018 | 24.0 | 69.0 | 5.0 | 2.0 | 18.948 | O | 35 |
| 10019 | 20.0 | 73.0 | 5.0 | 2.0 | 17.521 | O | 35 |
| 10020 | 10.0 | 83.0 | 5.0 | 2.0 | 13.890 | O | 35 |
| 10021 | 9.0 | 84.0 | 5.0 | 2.0 | 13.472 | O | 35 |
| 10022 | 8.0 | 85.0 | 5.0 | 2.0 | 13.055 | O | 35 |
| 10023 | 7.0 | 86.0 | 5.0 | 2.0 | 12.637 | O | 35 |
| 10024 | 6.0 | 87.0 | 5.0 | 2.0 | 12.219 | O | 35 |
| 10025 | 5.0 | 88.0 | 5.0 | 2.0 | 11.801 | O | 35 |
| 10026 | 4.0 | 89.0 | 5.0 | 2.0 | 11.383 | O | 35 |
| 10027 | 3.0 | 90.0 | 5.0 | 2.0 | 10.965 | O | 35 |
| 10028 | 2.0 | 91.0 | 5.0 | 2.0 | 10.547 | O | 35 |
| 10029 | 1.0 | 92.0 | 5.0 | 2.0 | 10.129 | O | 35 |
| 10030 | 0.0 | 93.0 | 5.0 | 2.0 | 9.711 | O | 35 |
| 10031 | 25.0 | 63.0 | 10.0 | 2.0 | 19.250 | X | 69 |
| 10032 | 24.3 | 63.7 | 10.0 | 2.0 | 19.000 | **X** | 69 |
| 10033 | 24.2 | 63.8 | 10.0 | 2.0 | 18.964 | O | 69 |
| 10034 | 24.0 | 64.0 | 10.0 | 2.0 | 18.893 | O | 69 |
| 10035 | 20.0 | 68.0 | 10.0 | 2.0 | 17.465 | O | 69 |
| 10036 | 10.0 | 78.0 | 10.0 | 2.0 | 13.871 | O | 69 |
| 10037 | 9.0 | 79.0 | 10.0 | 2.0 | 13.453 | O | 69 |
| 10038 | 8.0 | 80.0 | 10.0 | 2.0 | 13.035 | O | 69 |
| 10039 | 7.0 | 81.0 | 10.0 | 2.0 | 12.618 | O | 69 |
| 10040 | 6.0 | 82.0 | 10.0 | 2.0 | 12.200 | O | 69 |
| 10041 | 5.0 | 83.0 | 10.0 | 2.0 | 11.782 | O | 69 |
| 10042 | 4.0 | 84.0 | 10.0 | 2.0 | 11.364 | O | 69 |
| 10043 | 3.0 | 85.0 | 10.0 | 2.0 | 10.946 | O | 69 |
| 10044 | 2.0 | 86.0 | 10.0 | 2.0 | 10.528 | O | 69 |
| 10045 | 1.0 | 87.0 | 10.0 | 2.0 | 10.110 | O | 69 |
| 10046 | 0.0 | 88.0 | 10.0 | 2.0 | 9.692 | O | 69 |
| 10047 | 25.0 | 58.0 | 15.0 | 2.0 | 19.194 | X | 102 |
| 10048 | 24.5 | 58.5 | 15.0 | 2.0 | 19.016 | X | 102 |
| 10049 | 24.4 | 58.6 | 15.0 | 2.0 | 18.980 | O | 102 |

[Table 183]

| | | | | | | | |
|---|---|---|---|---|---|---|---|
| 10050 | 24.0 | 59.0 | 15.0 | 2.0 | 18.837 | O | 102 |
| 10051 | 20.0 | 63.0 | 15.0 | 2.0 | 17.410 | O | 102 |
| 10052 | 10.0 | 73.0 | 15.0 | 2.0 | 13.842 | O | 102 |
| 10053 | 9.0 | 74.0 | 15.0 | 2.0 | 13.434 | O | 102 |
| 10054 | 8.0 | 75.0 | 15.0 | 2.0 | 13.016 | O | 102 |
| 10055 | 7.0 | 76.0 | 15.0 | 2.0 | 12.598 | O | 102 |
| 10056 | 6.0 | 77.0 | 15.0 | 2.0 | 12.181 | O | 102 |
| 10057 | 5.0 | 78.0 | 15.0 | 2.0 | 11.763 | O | 102 |
| 10058 | 4.0 | 79.0 | 15.0 | 2.0 | 11.345 | O | 102 |
| 10059 | 3.0 | 80.0 | 15.0 | 2.0 | 10.927 | O | 102 |
| 10060 | 2.0 | 81.0 | 15.0 | 2.0 | 10.509 | O | 102 |
| 10061 | 1.0 | 82.0 | 15.0 | 2.0 | 10.091 | O | 102 |
| 10062 | 0.0 | 83.0 | 15.0 | 2.0 | 9.673 | O | 102 |
| 10063 | 25.0 | 53.0 | 20.0 | 2.0 | 19.139 | X | 136 |
| 10064 | 24.7 | 53.3 | 20.0 | 2.0 | 19.032 | X | 136 |
| 10065 | 24.6 | 53.4 | 20.0 | 2.0 | 18.996 | O | 136 |
| 10066 | 24.0 | 54.0 | 20.0 | 2.0 | 18.782 | O | 136 |
| 10067 | 20.0 | 58.0 | 20.0 | 2.0 | 17.355 | O | 136 |
| 10068 | 10.0 | 68.0 | 20.0 | 2.0 | 13.787 | O | 136 |
| 10069 | 9.0 | 69.0 | 20.0 | 2.0 | 13.415 | O | 136 |
| 10070 | 8.0 | 70.0 | 20.0 | 2.0 | 12.997 | O | 136 |
| 10071 | 7.0 | 71.0 | 20.0 | 2.0 | 12.579 | O | 136 |
| 10072 | 6.0 | 72.0 | 20.0 | 2.0 | 12.162 | O | 136 |
| 10073 | 5.0 | 73.0 | 20.0 | 2.0 | 11.744 | O | 136 |
| 10074 | 4.0 | 74.0 | 20.0 | 2.0 | 11.326 | O | 136 |
| 10075 | 3.0 | 75.0 | 20.0 | 2.0 | 10.908 | O | 136 |
| 10076 | 2.0 | 76.0 | 20.0 | 2.0 | 10.490 | O | 136 |
| 10077 | 1.0 | 77.0 | 20.0 | 2.0 | 10.072 | O | 136 |
| 10078 | 0.0 | 78.0 | 20.0 | 2.0 | 9.654 | O | 136 |
| 10079 | 25.0 | 51.0 | 22.0 | 2.0 | 19.117 | X | 150 |
| 10080 | 24.7 | 51.3 | 22.0 | 2.0 | 19.010 | X | 150 |
| 10081 | 24.6 | 51.4 | 22.0 | 2.0 | 18.974 | O | 150 |
| 10082 | 24.0 | 52.0 | 22.0 | 2.0 | 18.760 | O | 150 |
| 10083 | 20.0 | 56.0 | 22.0 | 2.0 | 17.333 | O | 150 |
| 10084 | 10.0 | 66.0 | 22.0 | 2.0 | 13.765 | O | 150 |
| 10085 | 9.0 | 67.0 | 22.0 | 2.0 | 13.408 | O | 150 |
| 10086 | 8.0 | 68.0 | 22.0 | 2.0 | 12.990 | O | 150 |
| 10087 | 7.0 | 69.0 | 22.0 | 2.0 | 12.572 | O | 150 |
| 10088 | 6.0 | 70.0 | 22.0 | 2.0 | 12.154 | O | 150 |
| 10089 | 5.0 | 71.0 | 22.0 | 2.0 | 11.736 | O | 150 |
| 10090 | 4.0 | 72.0 | 22.0 | 2.0 | 11.318 | O | 150 |
| 10091 | 3.0 | 73.0 | 22.0 | 2.0 | 10.900 | O | 150 |
| 10092 | 2.0 | 74.0 | 22.0 | 2.0 | 10.482 | O | 150 |
| 10093 | 1.0 | 75.0 | 22.0 | 2.0 | 10.064 | O | 150 |
| 10094 | 0.0 | 76.0 | 22.0 | 2.0 | 9.646 | O | 150 |
| 10095 | 25.0 | 69.0 | 2.0 | 4.0 | 19.125 | X | 15 |
| 10096 | 24.7 | 69.3 | 2.0 | 4.0 | 19.018 | X | 15 |
| 10097 | 24.6 | 69.4 | 2.0 | 4.0 | 18.982 | O | 15 |
| 10098 | 24.0 | 70.0 | 2.0 | 4.0 | 18.768 | O | 15 |
| 10099 | 20.0 | 74.0 | 2.0 | 4.0 | 17.341 | O | 15 |

[Table 184]

| | | | | | | | |
|---|---|---|---|---|---|---|---|
| 10100 | 10.0 | 84.0 | 2.0 | 4.0 | 13.703 | O | 15 |
| 10101 | 9.0 | 85.0 | 2.0 | 4.0 | 13.285 | O | 15 |
| 10102 | 8.0 | 86.0 | 2.0 | 4.0 | 12.867 | O | 15 |
| 10103 | 7.0 | 87.0 | 2.0 | 4.0 | 12.449 | O | 15 |
| 10104 | 6.0 | 88.0 | 2.0 | 4.0 | 12.032 | O | 15 |
| 10105 | 5.0 | 89.0 | 2.0 | 4.0 | 11.614 | O | 15 |
| 10106 | 4.0 | 90.0 | 2.0 | 4.0 | 11.196 | O | 15 |
| 10107 | 3.0 | 91.0 | 2.0 | 4.0 | 10.778 | O | 15 |
| 10108 | 2.0 | 92.0 | 2.0 | 4.0 | 10.360 | O | 15 |
| 10109 | 1.0 | 93.0 | 2.0 | 4.0 | 9.942 | O | 15 |
| 10110 | 0.0 | 94.0 | 2.0 | 4.0 | 9.524 | O | 15 |
| 10111 | 25.0 | 66.0 | 5.0 | 4.0 | 19.092 | X | 35 |
| 10112 | 24.8 | 66.2 | 5.0 | 4.0 | 19.020 | X | 35 |
| 10113 | 24.7 | 66.3 | 5.0 | 4.0 | 18.985 | O | 35 |
| 10114 | 24.0 | 67.0 | 5.0 | 4.0 | 18.735 | O | 35 |
| 10115 | 20.0 | 71.0 | 5.0 | 4.0 | 17.308 | O | 35 |
| 10116 | 10.0 | 81.0 | 5.0 | 4.0 | 13.692 | O | 35 |
| 10117 | 9.0 | 82.0 | 5.0 | 4.0 | 13.274 | O | 35 |
| 10118 | 8.0 | 83.0 | 5.0 | 4.0 | 12.856 | O | 35 |
| 10119 | 7.0 | 84.0 | 5.0 | 4.0 | 12.438 | O | 35 |
| 10120 | 6.0 | 85.0 | 5.0 | 4.0 | 12.020 | O | 35 |
| 10121 | 5.0 | 86.0 | 5.0 | 4.0 | 11.602 | O | 35 |
| 10122 | 4.0 | 87.0 | 5.0 | 4.0 | 11.184 | O | 35 |
| 10123 | 3.0 | 88.0 | 5.0 | 4.0 | 10.766 | O | 35 |
| 10124 | 2.0 | 89.0 | 5.0 | 4.0 | 10.348 | O | 35 |
| 10125 | 1.0 | 90.0 | 5.0 | 4.0 | 9.931 | O | 35 |
| 10126 | 0.0 | 91.0 | 5.0 | 4.0 | 9.513 | O | 35 |
| 10127 | 25.0 | 61.0 | 10.0 | 4.0 | 19.036 | X | 69 |
| 10128 | 24.9 | 61.1 | 10.0 | 4.0 | 19.001 | X | 69 |
| 10129 | 24.8 | 61.2 | 10.0 | 4.0 | 18.965 | O | 69 |
| 10130 | 24.0 | 62.0 | 10.0 | 4.0 | 18.680 | O | 69 |
| 10131 | 20.0 | 66.0 | 10.0 | 4.0 | 17.252 | O | 69 |
| 10132 | 10.0 | 76.0 | 10.0 | 4.0 | 13.673 | O | 69 |
| 10133 | 9.0 | 77.0 | 10.0 | 4.0 | 13.255 | O | 69 |
| 10134 | 8.0 | 78.0 | 10.0 | 4.0 | 12.837 | O | 69 |
| 10135 | 7.0 | 79.0 | 10.0 | 4.0 | 12.419 | O | 69 |
| 10136 | 6.0 | 80.0 | 10.0 | 4.0 | 12.001 | O | 69 |
| 10137 | 5.0 | 81.0 | 10.0 | 4.0 | 11.583 | O | 69 |
| 10138 | 4.0 | 82.0 | 10.0 | 4.0 | 11.165 | O | 69 |
| 10139 | 3.0 | 83.0 | 10.0 | 4.0 | 10.747 | O | 69 |
| 10140 | 2.0 | 84.0 | 10.0 | 4.0 | 10.329 | O | 69 |
| 10141 | 1.0 | 85.0 | 10.0 | 4.0 | 9.911 | O | 69 |
| 10142 | 0.0 | 86.0 | 10.0 | 4.0 | 9.494 | O | 69 |
| 10143 | 26.0 | 55.0 | 15.0 | 4.0 | 19.338 | X | 102 |
| 10144 | 25.1 | 55.9 | 15.0 | 4.0 | 19.017 | X | 102 |
| 10145 | 25.0 | 56.0 | 15.0 | 4.0 | 18.981 | O | 102 |
| 10146 | 20.0 | 61.0 | 15.0 | 4.0 | 17.197 | O | 102 |
| 10147 | 10.0 | 71.0 | 15.0 | 4.0 | 13.629 | O | 102 |
| 10148 | 9.0 | 72.0 | 15.0 | 4.0 | 13.236 | O | 102 |
| 10149 | 8.0 | 73.0 | 15.0 | 4.0 | 12.818 | O | 102 |

[Table 185]

| | | | | | | | |
|---|---|---|---|---|---|---|---|
| 10150 | 7.0 | 74.0 | 15.0 | 4.0 | 12.400 | O | 102 |
| 10151 | 6.0 | 75.0 | 15.0 | 4.0 | 11.982 | O | 102 |
| 10152 | 5.0 | 76.0 | 15.0 | 4.0 | 11.564 | O | 102 |
| 10153 | 4.0 | 77.0 | 15.0 | 4.0 | 11.146 | O | 102 |
| 10154 | 3.0 | 78.0 | 15.0 | 4.0 | 10.728 | O | 102 |
| 10155 | 2.0 | 79.0 | 15.0 | 4.0 | 10.310 | O | 102 |
| 10156 | 1.0 | 80.0 | 15.0 | 4.0 | 9.892 | O | 102 |
| 10157 | 0.0 | 81.0 | 15.0 | 4.0 | 9.474 | O | 102 |
| 10158 | 26.0 | 50.0 | 20.0 | 4.0 | 19.283 | X | 136 |
| 10159 | 25.3 | 50.7 | 20.0 | 4.0 | 19.033 | X | 136 |
| 10160 | 25.2 | 50.8 | 20.0 | 4.0 | 18.997 | O | 136 |
| 10161 | 25.0 | 51.0 | 20.0 | 4.0 | 18.926 | O | 136 |
| 10162 | 20.0 | 56.0 | 20.0 | 4.0 | 17.142 | O | 136 |
| 10163 | 10.0 | 66.0 | 20.0 | 4.0 | 13.574 | O | 136 |
| 10164 | 9.0 | 67.0 | 20.0 | 4.0 | 13.217 | O | 136 |
| 10165 | 8.0 | 68.0 | 20.0 | 4.0 | 12.799 | O | 136 |
| 10166 | 7.0 | 69.0 | 20.0 | 4.0 | 12.381 | O | 136 |
| 10167 | 6.0 | 70.0 | 20.0 | 4.0 | 11.963 | O | 136 |
| 10168 | 5.0 | 71.0 | 20.0 | 4.0 | 11.545 | O | 136 |
| 10169 | 4.0 | 72.0 | 20.0 | 4.0 | 11.127 | O | 136 |
| 10170 | 3.0 | 73.0 | 20.0 | 4.0 | 10.709 | O | 136 |
| 10171 | 2.0 | 74.0 | 20.0 | 4.0 | 10.291 | O | 136 |
| 10172 | 1.0 | 75.0 | 20.0 | 4.0 | 9.873 | O | 136 |
| 10173 | 0.0 | 76.0 | 20.0 | 4.0 | 9.455 | O | 136 |
| 10174 | 26.0 | 48.0 | 22.0 | 4.0 | 19.261 | X | 150 |
| 10175 | 25.3 | 48.7 | 22.0 | 4.0 | 19.011 | X | 150 |
| 10176 | 25.2 | 48.8 | 22.0 | 4.0 | 18.975 | O | 150 |
| 10177 | 25.0 | 49.0 | 22.0 | 4.0 | 18.904 | O | 150 |
| 10178 | 20.0 | 54.0 | 22.0 | 4.0 | 17.120 | O | 150 |
| 10179 | 10.0 | 64.0 | 22.0 | 4.0 | 13.552 | O | 150 |
| 10180 | 9.0 | 65.0 | 22.0 | 4.0 | 13.195 | O | 150 |
| 10181 | 8.0 | 66.0 | 22.0 | 4.0 | 12.791 | O | 150 |
| 10182 | 7.0 | 67.0 | 22.0 | 4.0 | 12.373 | O | 150 |
| 10183 | 6.0 | 68.0 | 22.0 | 4.0 | 11.955 | O | 150 |
| 10184 | 5.0 | 69.0 | 22.0 | 4.0 | 11.537 | O | 150 |
| 10185 | 4.0 | 70.0 | 22.0 | 4.0 | 11.119 | O | 150 |
| 10186 | 3.0 | 71.0 | 22.0 | 4.0 | 10.702 | O | 150 |
| 10187 | 2.0 | 72.0 | 22.0 | 4.0 | 10.284 | O | 150 |
| 10188 | 1.0 | 73.0 | 22.0 | 4.0 | 9.866 | O | 150 |
| 10189 | 0.0 | 74.0 | 22.0 | 4.0 | 9.448 | O | 150 |
| 10190 | 26.0 | 66.0 | 2.0 | 6.0 | 19.269 | X | 15 |
| 10191 | 25.3 | 66.7 | 2.0 | 6.0 | 19.019 | X | 15 |
| 10192 | 25.2 | 66.8 | 2.0 | 6.0 | 18.983 | O | 15 |
| 10193 | 25.0 | 67.0 | 2.0 | 6.0 | 18.912 | O | 15 |
| 10194 | 20.0 | 72.0 | 2.0 | 6.0 | 17.128 | O | 15 |
| 10195 | 10.0 | 82.0 | 2.0 | 6.0 | 13.505 | O | 15 |
| 10196 | 9.0 | 83.0 | 2.0 | 6.0 | 13.087 | O | 15 |
| 10197 | 8.0 | 84.0 | 2.0 | 6.0 | 12.669 | O | 15 |
| 10198 | 7.0 | 85.0 | 2.0 | 6.0 | 12.251 | O | 15 |
| 10199 | 6.0 | 86.0 | 2.0 | 6.0 | 11.833 | O | 15 |

[Table 186]

203

| | | | | | | | |
|---|---|---|---|---|---|---|---|
| 10200 | 5.0 | 87.0 | 2.0 | 6.0 | 11.415 | O | 15 |
| 10201 | 4.0 | 88.0 | 2.0 | 6.0 | 10.997 | O | 15 |
| 10202 | 3.0 | 89.0 | 2.0 | 6.0 | 10.579 | O | 15 |
| 10203 | 2.0 | 90.0 | 2.0 | 6.0 | 10.161 | O | 15 |
| 10204 | 1.0 | 91.0 | 2.0 | 6.0 | 9.743 | O | 15 |
| 10205 | 0.0 | 92.0 | 2.0 | 6.0 | 9.325 | O | 15 |
| 10206 | 26.0 | 63.0 | 5.0 | 6.0 | 19.235 | X | 35 |
| 10207 | 25.4 | 63.6 | 5.0 | 6.0 | 19.021 | X | 35 |
| 10208 | 25.3 | 63.7 | 5.0 | 6.0 | 18.986 | O | 35 |
| 10209 | 25.0 | 64.0 | 5.0 | 6.0 | 18.879 | O | 35 |
| 10210 | 20.0 | 69.0 | 5.0 | 6.0 | 17.095 | O | 35 |
| 10211 | 10.0 | 79.0 | 5.0 | 6.0 | 13.493 | O | 35 |
| 10212 | 9.0 | 80.0 | 5.0 | 6.0 | 13.075 | O | 35 |
| 10213 | 8.0 | 81.0 | 5.0 | 6.0 | 12.657 | O | 35 |
| 10214 | 7.0 | 82.0 | 5.0 | 6.0 | 12.239 | O | 35 |
| 10215 | 6.0 | 83.0 | 5.0 | 6.0 | 11.822 | O | 35 |
| 10216 | 5.0 | 84.0 | 5.0 | 6.0 | 11.404 | O | 35 |
| 10217 | 4.0 | 85.0 | 5.0 | 6.0 | 10.986 | O | 35 |
| 10218 | 3.0 | 86.0 | 5.0 | 6.0 | 10.568 | O | 35 |
| 10219 | 2.0 | 87.0 | 5.0 | 6.0 | 10.150 | O | 35 |
| 10220 | 1.0 | 88.0 | 5.0 | 6.0 | 9.732 | O | 35 |
| 10221 | 0.0 | 89.0 | 5.0 | 6.0 | 9.314 | O | 35 |
| 10222 | 26.0 | 58.0 | 10.0 | 6.0 | 19.180 | X | 69 |
| 10223 | 25.5 | 58.5 | 10.0 | 6.0 | 19.002 | X | 69 |
| 10224 | 25.4 | 58.6 | 10.0 | 6.0 | 18.966 | O | 69 |
| 10225 | 25.0 | 59.0 | 10.0 | 6.0 | 18.823 | O | 69 |
| 10226 | 20.0 | 64.0 | 10.0 | 6.0 | 17.039 | O | 69 |
| 10227 | 10.0 | 74.0 | 10.0 | 6.0 | 13.471 | O | 69 |
| 10228 | 9.0 | 75.0 | 10.0 | 6.0 | 13.056 | O | 69 |
| 10229 | 8.0 | 76.0 | 10.0 | 6.0 | 12.638 | O | 69 |
| 10230 | 7.0 | 77.0 | 10.0 | 6.0 | 12.220 | O | 69 |
| 10231 | 6.0 | 78.0 | 10.0 | 6.0 | 11.802 | O | 69 |
| 10232 | 5.0 | 79.0 | 10.0 | 6.0 | 11.385 | O | 69 |
| 10233 | 4.0 | 80.0 | 10.0 | 6.0 | 10.967 | O | 69 |
| 10234 | 3.0 | 81.0 | 10.0 | 6.0 | 10.549 | O | 69 |
| 10235 | 2.0 | 82.0 | 10.0 | 6.0 | 10.131 | O | 69 |
| 10236 | 1.0 | 83.0 | 10.0 | 6.0 | 9.713 | O | 69 |
| 10237 | 0.0 | 84.0 | 10.0 | 6.0 | 9.295 | O | 69 |
| 10238 | 26.0 | 53.0 | 15.0 | 6.0 | 19.125 | X | 102 |
| 10239 | 25.7 | 53.3 | 15.0 | 6.0 | 19.018 | X | 102 |
| 10240 | 25.6 | 53.4 | 15.0 | 6.0 | 18.982 | O | 102 |
| 10241 | 25.0 | 54.0 | 15.0 | 6.0 | 18.768 | O | 102 |
| 10242 | 20.0 | 59.0 | 15.0 | 6.0 | 16.984 | O | 102 |
| 10243 | 10.0 | 69.0 | 15.0 | 6.0 | 13.416 | O | 102 |
| 10244 | 9.0 | 70.0 | 15.0 | 6.0 | 13.037 | O | 102 |
| 10245 | 8.0 | 71.0 | 15.0 | 6.0 | 12.619 | O | 102 |
| 10246 | 7.0 | 72.0 | 15.0 | 6.0 | 12.201 | O | 102 |
| 10247 | 6.0 | 73.0 | 15.0 | 6.0 | 11.783 | O | 102 |
| 10248 | 5.0 | 74.0 | 15.0 | 6.0 | 11.365 | O | 102 |
| 10249 | 4.0 | 75.0 | 15.0 | 6.0 | 10.948 | O | 102 |

[Table 187]

| 10250 | 3.0 | 76.0 | 15.0 | 6.0 | 10.530 | O | 102 |
|---|---|---|---|---|---|---|---|
| 10251 | 2.0 | 77.0 | 15.0 | 6.0 | 10.112 | O | 102 |
| 10252 | 1.0 | 78.0 | 15.0 | 6.0 | 9.694 | O | 102 |
| 10253 | 0.0 | 79.0 | 15.0 | 6.0 | 9.276 | O | 102 |
| 10254 | 26.0 | 48.0 | 20.0 | 6.0 | 19.070 | X | 136 |
| 10255 | 25.9 | 48.1 | 20.0 | 6.0 | 19.034 | X | 136 |
| 10256 | 25.8 | 48.2 | 20.0 | 6.0 | 18.998 | O | 136 |
| 10257 | 25.0 | 49.0 | 20.0 | 6.0 | 18.713 | O | 136 |
| 10258 | 20.0 | 54.0 | 20.0 | 6.0 | 16.929 | O | 136 |
| 10259 | 10.0 | 64.0 | 20.0 | 6.0 | 13.361 | O | 136 |
| 10260 | 9.0 | 65.0 | 20.0 | 6.0 | 13.004 | O | 136 |
| 10261 | 8.0 | 66.0 | 20.0 | 6.0 | 12.600 | O | 136 |
| 10262 | 7.0 | 67.0 | 20.0 | 6.0 | 12.182 | O | 136 |
| 10263 | 6.0 | 68.0 | 20.0 | 6.0 | 11.764 | O | 136 |
| 10264 | 5.0 | 69.0 | 20.0 | 6.0 | 11.346 | O | 136 |
| 10265 | 4.0 | 70.0 | 20.0 | 6.0 | 10.929 | O | 136 |
| 10266 | 3.0 | 71.0 | 20.0 | 6.0 | 10.511 | O | 136 |
| 10267 | 2.0 | 72.0 | 20.0 | 6.0 | 10.093 | O | 136 |
| 10268 | 1.0 | 73.0 | 20.0 | 6.0 | 9.675 | O | 136 |
| 10269 | 0.0 | 74.0 | 20.0 | 6.0 | 9.257 | O | 136 |
| 10270 | 26.0 | 46.0 | 22.0 | 6.0 | 19.048 | X | 150 |
| 10271 | 25.9 | 46.1 | 22.0 | 6.0 | 19.012 | X | 150 |
| 10272 | 25.8 | 46.2 | 22.0 | 6.0 | 18.976 | O | 150 |
| 10273 | 25.0 | 47.0 | 22.0 | 6.0 | 18.691 | O | 150 |
| 10274 | 20.0 | 52.0 | 22.0 | 6.0 | 16.907 | O | 150 |
| 10275 | 10.0 | 62.0 | 22.0 | 6.0 | 13.339 | O | 150 |
| 10276 | 9.0 | 63.0 | 22.0 | 6.0 | 12.982 | O | 150 |
| 10277 | 8.0 | 64.0 | 22.0 | 6.0 | 12.593 | O | 150 |
| 10278 | 7.0 | 65.0 | 22.0 | 6.0 | 12.175 | O | 150 |
| 10279 | 6.0 | 66.0 | 22.0 | 6.0 | 11.757 | O | 150 |
| 10280 | 5.0 | 67.0 | 22.0 | 6.0 | 11.339 | O | 150 |
| 10281 | 4.0 | 68.0 | 22.0 | 6.0 | 10.921 | O | 150 |
| 10282 | 3.0 | 69.0 | 22.0 | 6.0 | 10.503 | O | 150 |
| 10283 | 2.0 | 70.0 | 22.0 | 6.0 | 10.085 | O | 150 |
| 10284 | 1.0 | 71.0 | 22.0 | 6.0 | 9.667 | O | 150 |
| 10285 | 0.0 | 72.0 | 22.0 | 6.0 | 9.249 | O | 150 |
| 10286 | 26.0 | 64.0 | 2.0 | 8.0 | 19.056 | X | 15 |
| 10287 | 25.9 | 64.1 | 2.0 | 8.0 | 19.020 | X | 15 |
| 10288 | 25.8 | 64.2 | 2.0 | 8.0 | 18.984 | O | 15 |
| 10289 | 25.0 | 65.0 | 2.0 | 8.0 | 18.699 | O | 15 |
| 10290 | 20.0 | 70.0 | 2.0 | 8.0 | 16.915 | O | 15 |
| 10291 | 10.0 | 80.0 | 2.0 | 8.0 | 13.306 | O | 15 |
| 10292 | 9.0 | 81.0 | 2.0 | 8.0 | 12.888 | O | 15 |
| 10293 | 8.0 | 82.0 | 2.0 | 8.0 | 12.470 | O | 15 |
| 10294 | 7.0 | 83.0 | 2.0 | 8.0 | 12.052 | O | 15 |
| 10295 | 6.0 | 84.0 | 2.0 | 8.0 | 11.634 | O | 15 |
| 10296 | 5.0 | 85.0 | 2.0 | 8.0 | 11.216 | O | 15 |
| 10297 | 4.0 | 86.0 | 2.0 | 8.0 | 10.799 | O | 15 |
| 10298 | 3.0 | 87.0 | 2.0 | 8.0 | 10.381 | O | 15 |
| 10299 | 2.0 | 88.0 | 2.0 | 8.0 | 9.963 | O | 15 |

[Table 188]

| 10300 | 1.0 | 89.0 | 2.0 | 8.0 | 9.545 | O | 15 |
|---|---|---|---|---|---|---|---|
| 10301 | 0.0 | 90.0 | 2.0 | 8.0 | 9.127 | O | 15 |
| 10302 | 26.0 | 61.0 | 5.0 | 8.0 | 19.022 | X | 35 |
| 10303 | 25.9 | 61.1 | 5.0 | 8.0 | 18.987 | O | 35 |
| 10304 | 25.0 | 62.0 | 5.0 | 8.0 | 18.666 | O | 35 |
| 10305 | 20.0 | 67.0 | 5.0 | 8.0 | 16.882 | O | 35 |
| 10306 | 10.0 | 77.0 | 5.0 | 8.0 | 13.295 | O | 35 |
| 10307 | 9.0 | 78.0 | 5.0 | 8.0 | 12.877 | O | 35 |
| 10308 | 8.0 | 79.0 | 5.0 | 8.0 | 12.459 | O | 35 |
| 10309 | 7.0 | 80.0 | 5.0 | 8.0 | 12.041 | O | 35 |
| 10310 | 6.0 | 81.0 | 5.0 | 8.0 | 11.623 | O | 35 |
| 10311 | 5.0 | 82.0 | 5.0 | 8.0 | 11.205 | O | 35 |
| 10312 | 4.0 | 83.0 | 5.0 | 8.0 | 10.787 | O | 35 |
| 10313 | 3.0 | 84.0 | 5.0 | 8.0 | 10.369 | O | 35 |
| 10314 | 2.0 | 85.0 | 5.0 | 8.0 | 9.951 | O | 35 |
| 10315 | 1.0 | 86.0 | 5.0 | 8.0 | 9.533 | O | 35 |
| 10316 | 0.0 | 87.0 | 5.0 | 8.0 | 9.115 | O | 35 |
| 10317 | 27.0 | 55.0 | 10.0 | 8.0 | 19.324 | X | 69 |
| 10318 | 26.1 | 55.9 | 10.0 | 8.0 | 19.003 | X | 69 |
| 10319 | 26.0 | 56.0 | 10.0 | 8.0 | 18.967 | O | 69 |
| 10320 | 20.0 | 62.0 | 10.0 | 8.0 | 16.826 | O | 69 |
| 10321 | 10.0 | 72.0 | 10.0 | 8.0 | 13.258 | O | 69 |
| 10322 | 9.0 | 73.0 | 10.0 | 8.0 | 12.858 | O | 69 |
| 10323 | 8.0 | 74.0 | 10.0 | 8.0 | 12.440 | O | 69 |
| 10324 | 7.0 | 75.0 | 10.0 | 8.0 | 12.022 | O | 69 |
| 10325 | 6.0 | 76.0 | 10.0 | 8.0 | 11.604 | O | 69 |
| 10326 | 5.0 | 77.0 | 10.0 | 8.0 | 11.186 | O | 69 |
| 10327 | 4.0 | 78.0 | 10.0 | 8.0 | 10.768 | O | 69 |
| 10328 | 3.0 | 79.0 | 10.0 | 8.0 | 10.350 | O | 69 |
| 10329 | 2.0 | 80.0 | 10.0 | 8.0 | 9.932 | O | 69 |
| 10330 | 1.0 | 81.0 | 10.0 | 8.0 | 9.514 | O | 69 |
| 10331 | 0.0 | 82.0 | 10.0 | 8.0 | 9.096 | O | 69 |
| 10332 | 27.0 | 50.0 | 15.0 | 8.0 | 19.269 | X | 102 |
| 10333 | 26.3 | 50.7 | 15.0 | 8.0 | 19.019 | X | 102 |
| 10334 | 26.2 | 50.8 | 15.0 | 8.0 | 18.983 | O | 102 |
| 10335 | 26.0 | 51.0 | 15.0 | 8.0 | 18.912 | O | 102 |
| 10336 | 20.0 | 57.0 | 15.0 | 8.0 | 16.771 | O | 102 |
| 10337 | 10.0 | 67.0 | 15.0 | 8.0 | 13.203 | O | 102 |
| 10338 | 9.0 | 68.0 | 15.0 | 8.0 | 12.839 | O | 102 |
| 10339 | 8.0 | 69.0 | 15.0 | 8.0 | 12.421 | O | 102 |
| 10340 | 7.0 | 70.0 | 15.0 | 8.0 | 12.003 | O | 102 |
| 10341 | 6.0 | 71.0 | 15.0 | 8.0 | 11.585 | O | 102 |
| 10342 | 5.0 | 72.0 | 15.0 | 8.0 | 11.167 | O | 102 |
| 10343 | 4.0 | 73.0 | 15.0 | 8.0 | 10.749 | O | 102 |
| 10344 | 3.0 | 74.0 | 15.0 | 8.0 | 10.331 | O | 102 |
| 10345 | 2.0 | 75.0 | 15.0 | 8.0 | 9.913 | O | 102 |
| 10346 | 1.0 | 76.0 | 15.0 | 8.0 | 9.495 | O | 102 |
| 10347 | 0.0 | 77.0 | 15.0 | 8.0 | 9.077 | O | 102 |
| 10348 | 27.0 | 45.0 | 20.0 | 8.0 | 19.213 | X | 136 |
| 10349 | 26.5 | 45.5 | 20.0 | 8.0 | 19.035 | X | 136 |

[Table 189]

| | | | | | | | |
|---|---|---|---|---|---|---|---|
| 10350 | 26.4 | 45.6 | 20.0 | 8.0 | 18.999 | O | 136 |
| 10351 | 26.0 | 46.0 | 20.0 | 8.0 | 18.857 | O | 136 |
| 10352 | 20.0 | 52.0 | 20.0 | 8.0 | 16.716 | O | 136 |
| 10353 | 10.0 | 62.0 | 20.0 | 8.0 | 13.148 | O | 136 |
| 10354 | 9.0 | 63.0 | 20.0 | 8.0 | 12.791 | O | 136 |
| 10355 | 8.0 | 64.0 | 20.0 | 8.0 | 12.402 | O | 136 |
| 10356 | 7.0 | 65.0 | 20.0 | 8.0 | 11.984 | O | 136 |
| 10357 | 6.0 | 66.0 | 20.0 | 8.0 | 11.566 | O | 136 |
| 10358 | 5.0 | 67.0 | 20.0 | 8.0 | 11.148 | O | 136 |
| 10359 | 4.0 | 68.0 | 20.0 | 8.0 | 10.730 | O | 136 |
| 10360 | 3.0 | 69.0 | 20.0 | 8.0 | 10.312 | O | 136 |
| 10361 | 2.0 | 70.0 | 20.0 | 8.0 | 9.894 | O | 136 |
| 10362 | 1.0 | 71.0 | 20.0 | 8.0 | 9.476 | O | 136 |
| 10363 | 0.0 | 72.0 | 20.0 | 8.0 | 9.058 | O | 136 |
| 10364 | 27.0 | 43.0 | 22.0 | 8.0 | 19.191 | X | 150 |
| 10365 | 26.5 | 43.5 | 22.0 | 8.0 | 19.013 | X | 150 |
| 10366 | 26.4 | 43.6 | 22.0 | 8.0 | 18.977 | O | 150 |
| 10367 | 26.0 | 44.0 | 22.0 | 8.0 | 18.835 | O | 150 |
| 10368 | 20.0 | 50.0 | 22.0 | 8.0 | 16.694 | O | 150 |
| 10369 | 10.0 | 60.0 | 22.0 | 8.0 | 13.126 | O | 150 |
| 10370 | 9.0 | 61.0 | 22.0 | 8.0 | 12.769 | O | 150 |
| 10371 | 8.0 | 62.0 | 22.0 | 8.0 | 12.394 | O | 150 |
| 10372 | 7.0 | 63.0 | 22.0 | 8.0 | 11.976 | O | 150 |
| 10373 | 6.0 | 64.0 | 22.0 | 8.0 | 11.558 | O | 150 |
| 10374 | 5.0 | 65.0 | 22.0 | 8.0 | 11.140 | O | 150 |
| 10375 | 4.0 | 66.0 | 22.0 | 8.0 | 10.722 | O | 150 |
| 10376 | 3.0 | 67.0 | 22.0 | 8.0 | 10.304 | O | 150 |
| 10377 | 2.0 | 68.0 | 22.0 | 8.0 | 9.886 | O | 150 |
| 10378 | 1.0 | 69.0 | 22.0 | 8.0 | 9.469 | O | 150 |
| 10379 | 0.0 | 70.0 | 22.0 | 8.0 | 9.051 | O | 150 |
| 10380 | 27.0 | 61.0 | 2.0 | 10.0 | 19.199 | X | 15 |
| 10381 | 26.5 | 61.5 | 2.0 | 10.0 | 19.021 | X | 15 |
| 10382 | 26.4 | 61.6 | 2.0 | 10.0 | 18.985 | O | 15 |
| 10383 | 26.0 | 62.0 | 2.0 | 10.0 | 18.843 | O | 15 |
| 10384 | 20.0 | 68.0 | 2.0 | 10.0 | 16.702 | O | 15 |
| 10385 | 10.0 | 78.0 | 2.0 | 10.0 | 13.107 | O | 15 |
| 10386 | 9.0 | 79.0 | 2.0 | 10.0 | 12.690 | O | 15 |
| 10387 | 8.0 | 80.0 | 2.0 | 10.0 | 12.272 | O | 15 |
| 10388 | 7.0 | 81.0 | 2.0 | 10.0 | 11.854 | O | 15 |
| 10389 | 6.0 | 82.0 | 2.0 | 10.0 | 11.436 | O | 15 |
| 10390 | 5.0 | 83.0 | 2.0 | 10.0 | 11.018 | O | 15 |
| 10391 | 4.0 | 84.0 | 2.0 | 10.0 | 10.600 | O | 15 |
| 10392 | 3.0 | 85.0 | 2.0 | 10.0 | 10.182 | O | 15 |
| 10393 | 2.0 | 86.0 | 2.0 | 10.0 | 9.764 | O | 15 |
| 10394 | 1.0 | 87.0 | 2.0 | 10.0 | 9.346 | O | 15 |
| 10395 | 0.0 | 88.0 | 2.0 | 10.0 | 8.928 | O | 15 |
| 10396 | 27.0 | 58.0 | 5.0 | 10.0 | 19.166 | X | 35 |
| 10397 | 26.6 | 58.4 | 5.0 | 10.0 | 19.023 | X | 35 |
| 10398 | 26.5 | 58.5 | 5.0 | 10.0 | 18.988 | O | 35 |
| 10399 | 26.0 | 59.0 | 5.0 | 10.0 | 18.809 | O | 35 |

[Table 190]

207

| 10400 | 20.0 | 65.0 | 5.0 | 10.0 | 16.668 | O | 35 |
|---|---|---|---|---|---|---|---|
| 10401 | 10.0 | 75.0 | 5.0 | 10.0 | 13.096 | O | 35 |
| 10402 | 9.0 | 76.0 | 5.0 | 10.0 | 12.678 | O | 35 |
| 10403 | 8.0 | 77.0 | 5.0 | 10.0 | 12.260 | O | 35 |
| 10404 | 7.0 | 78.0 | 5.0 | 10.0 | 11.842 | O | 35 |
| 10405 | 6.0 | 79.0 | 5.0 | 10.0 | 11.424 | O | 35 |
| 10406 | 5.0 | 80.0 | 5.0 | 10.0 | 11.006 | O | 35 |
| 10407 | 4.0 | 81.0 | 5.0 | 10.0 | 10.589 | O | 35 |
| 10408 | 3.0 | 82.0 | 5.0 | 10.0 | 10.171 | O | 35 |
| 10409 | 2.0 | 83.0 | 5.0 | 10.0 | 9.753 | O | 35 |
| 10410 | 1.0 | 84.0 | 5.0 | 10.0 | 9.335 | O | 35 |
| 10411 | 0.0 | 85.0 | 5.0 | 10.0 | 8.917 | O | 35 |
| 10412 | 27.0 | 53.0 | 10.0 | 10.0 | 19.111 | X | 69 |
| 10413 | 26.7 | 53.3 | 10.0 | 10.0 | 19.004 | X | 69 |
| 10414 | 26.6 | 53.4 | 10.0 | 10.0 | 18.968 | O | 69 |
| 10415 | 26.0 | 54.0 | 10.0 | 10.0 | 18.754 | O | 69 |
| 10416 | 20.0 | 60.0 | 10.0 | 10.0 | 16.613 | O | 69 |
| 10417 | 10.0 | 70.0 | 10.0 | 10.0 | 13.045 | O | 69 |
| 10418 | 9.0 | 71.0 | 10.0 | 10.0 | 12.659 | O | 69 |
| 10419 | 8.0 | 72.0 | 10.0 | 10.0 | 12.241 | O | 69 |
| 10420 | 7.0 | 73.0 | 10.0 | 10.0 | 11.823 | O | 69 |
| 10421 | 6.0 | 74.0 | 10.0 | 10.0 | 11.405 | O | 69 |
| 10422 | 5.0 | 75.0 | 10.0 | 10.0 | 10.987 | O | 69 |
| 10423 | 4.0 | 76.0 | 10.0 | 10.0 | 10.569 | O | 69 |
| 10424 | 3.0 | 77.0 | 10.0 | 10.0 | 10.152 | O | 69 |
| 10425 | 2.0 | 78.0 | 10.0 | 10.0 | 9.734 | O | 69 |
| 10426 | 1.0 | 79.0 | 10.0 | 10.0 | 9.316 | O | 69 |
| 10427 | 0.0 | 80.0 | 10.0 | 10.0 | 8.898 | O | 69 |
| 10428 | 27.0 | 48.0 | 15.0 | 10.0 | 19.056 | X | 102 |
| 10429 | 26.9 | 48.1 | 15.0 | 10.0 | 19.020 | X | 102 |
| 10430 | 26.8 | 48.2 | 15.0 | 10.0 | 18.984 | O | 102 |
| 10431 | 26.0 | 49.0 | 15.0 | 10.0 | 18.699 | O | 102 |
| 10432 | 20.0 | 55.0 | 15.0 | 10.0 | 16.558 | O | 102 |
| 10433 | 10.0 | 65.0 | 15.0 | 10.0 | 12.990 | O | 102 |
| 10434 | 9.0 | 66.0 | 15.0 | 10.0 | 12.633 | O | 102 |
| 10435 | 8.0 | 67.0 | 15.0 | 10.0 | 12.222 | O | 102 |
| 10436 | 7.0 | 68.0 | 15.0 | 10.0 | 11.804 | O | 102 |
| 10437 | 6.0 | 69.0 | 15.0 | 10.0 | 11.386 | O | 102 |
| 10438 | 5.0 | 70.0 | 15.0 | 10.0 | 10.968 | O | 102 |
| 10439 | 4.0 | 71.0 | 15.0 | 10.0 | 10.550 | O | 102 |
| 10440 | 3.0 | 72.0 | 15.0 | 10.0 | 10.133 | O | 102 |
| 10441 | 2.0 | 73.0 | 15.0 | 10.0 | 9.715 | O | 102 |
| 10442 | 1.0 | 74.0 | 15.0 | 10.0 | 9.297 | O | 102 |
| 10443 | 0.0 | 75.0 | 15.0 | 10.0 | 8.879 | O | 102 |
| 10444 | 27.0 | 43.0 | 20.0 | 10.0 | 19.000 | X | 136 |
| 10445 | 26.9 | 43.1 | 20.0 | 10.0 | 18.965 | O | 136 |
| 10446 | 26.0 | 44.0 | 20.0 | 10.0 | 18.644 | O | 136 |
| 10447 | 20.0 | 50.0 | 20.0 | 10.0 | 16.503 | O | 136 |
| 10448 | 10.0 | 60.0 | 20.0 | 10.0 | 12.935 | O | 136 |
| 10449 | 9.0 | 61.0 | 20.0 | 10.0 | 12.578 | O | 136 |

[Table 191]

| 10450 | 8.0 | 62.0 | 20.0 | 10.0 | 12.203 | O | 136 |
|---|---|---|---|---|---|---|---|
| 10451 | 7.0 | 63.0 | 20.0 | 10.0 | 11.785 | O | 136 |
| 10452 | 6.0 | 64.0 | 20.0 | 10.0 | 11.367 | O | 136 |
| 10453 | 5.0 | 65.0 | 20.0 | 10.0 | 10.949 | O | 136 |
| 10454 | 4.0 | 66.0 | 20.0 | 10.0 | 10.531 | O | 136 |
| 10455 | 3.0 | 67.0 | 20.0 | 10.0 | 10.113 | O | 136 |
| 10456 | 2.0 | 68.0 | 20.0 | 10.0 | 9.696 | O | 136 |
| 10457 | 1.0 | 69.0 | 20.0 | 10.0 | 9.278 | O | 136 |
| 10458 | 0.0 | 70.0 | 20.0 | 10.0 | 8.860 | O | 136 |
| 10459 | 28.0 | 40.0 | 22.0 | 10.0 | 19.335 | X | 150 |
| 10460 | 27.1 | 40.9 | 22.0 | 10.0 | 19.014 | X | 150 |
| 10461 | 27.0 | 41.0 | 22.0 | 10.0 | 18.978 | O | 150 |
| 10462 | 20.0 | 48.0 | 22.0 | 10.0 | 16.481 | O | 150 |
| 10463 | 10.0 | 58.0 | 22.0 | 10.0 | 12.912 | O | 150 |
| 10464 | 9.0 | 59.0 | 22.0 | 10.0 | 12.556 | O | 150 |
| 10465 | 8.0 | 60.0 | 22.0 | 10.0 | 12.195 | O | 150 |
| 10466 | 7.0 | 61.0 | 22.0 | 10.0 | 11.778 | O | 150 |
| 10467 | 6.0 | 62.0 | 22.0 | 10.0 | 11.360 | O | 150 |
| 10468 | 5.0 | 63.0 | 22.0 | 10.0 | 10.942 | O | 150 |
| 10469 | 4.0 | 64.0 | 22.0 | 10.0 | 10.524 | O | 150 |
| 10470 | 3.0 | 65.0 | 22.0 | 10.0 | 10.106 | O | 150 |
| 10471 | 2.0 | 66.0 | 22.0 | 10.0 | 9.688 | O | 150 |
| 10472 | 1.0 | 67.0 | 22.0 | 10.0 | 9.270 | O | 150 |
| 10473 | 0.0 | 68.0 | 22.0 | 10.0 | 8.852 | O | 150 |

Tables 192 to 202 show the composition, combustion heat amount, and GWP of the working medium of a four-component system of propane, HFO-1123, HFC-32, and $CF_3I$.

[Table 192]

| Case | propane | HFO-1123 | HFC-32 | CF$_3$I | Heat of Combustion | Evaluation | GWP |
|---|---|---|---|---|---|---|---|
| 10474 | 25.0 | 68.0 | 2.0 | 5.0 | 19.085 | X | 15 |
| 10475 | 24.8 | 68.2 | 2.0 | 5.0 | 19.014 | X | 15 |
| 10476 | 24.7 | 68.3 | 2.0 | 5.0 | 18.978 | O | 15 |
| 10477 | 24.0 | 69.0 | 2.0 | 5.0 | 18.728 | O | 15 |
| 10478 | 20.0 | 73.0 | 2.0 | 5.0 | 17.301 | O | 15 |
| 10479 | 10.0 | 83.0 | 2.0 | 5.0 | 13.648 | O | 15 |
| 10480 | 9.0 | 84.0 | 2.0 | 5.0 | 13.230 | O | 15 |
| 10481 | 8.0 | 85.0 | 2.0 | 5.0 | 12.812 | O | 15 |
| 10482 | 7.0 | 86.0 | 2.0 | 5.0 | 12.394 | O | 15 |
| 10483 | 6.0 | 87.0 | 2.0 | 5.0 | 11.976 | O | 15 |
| 10484 | 5.0 | 88.0 | 2.0 | 5.0 | 11.558 | O | 15 |
| 10485 | 4.0 | 89.0 | 2.0 | 5.0 | 11.140 | O | 15 |
| 10486 | 3.0 | 90.0 | 2.0 | 5.0 | 10.722 | O | 15 |
| 10487 | 2.0 | 91.0 | 2.0 | 5.0 | 10.304 | O | 15 |
| 10488 | 1.0 | 92.0 | 2.0 | 5.0 | 9.886 | O | 15 |
| 10489 | 0.0 | 93.0 | 2.0 | 5.0 | 9.469 | O | 15 |
| 10490 | 25.0 | 65.0 | 5.0 | 5.0 | 19.052 | X | 35 |
| 10491 | 24.9 | 65.1 | 5.0 | 5.0 | 19.016 | X | 35 |
| 10492 | 24.8 | 65.2 | 5.0 | 5.0 | 18.980 | O | 35 |
| 10493 | 24.0 | 66.0 | 5.0 | 5.0 | 18.695 | O | 35 |
| 10494 | 20.0 | 70.0 | 5.0 | 5.0 | 17.268 | O | 35 |
| 10495 | 10.0 | 80.0 | 5.0 | 5.0 | 13.636 | O | 35 |
| 10496 | 9.0 | 81.0 | 5.0 | 5.0 | 13.218 | O | 35 |
| 10497 | 8.0 | 82.0 | 5.0 | 5.0 | 12.800 | O | 35 |
| 10498 | 7.0 | 83.0 | 5.0 | 5.0 | 12.383 | O | 35 |
| 10499 | 6.0 | 84.0 | 5.0 | 5.0 | 11.965 | O | 35 |
| 10500 | 5.0 | 85.0 | 5.0 | 5.0 | 11.547 | O | 35 |
| 10501 | 4.0 | 86.0 | 5.0 | 5.0 | 11.129 | O | 35 |
| 10502 | 3.0 | 87.0 | 5.0 | 5.0 | 10.711 | O | 35 |
| 10503 | 2.0 | 88.0 | 5.0 | 5.0 | 10.293 | O | 35 |
| 10504 | 1.0 | 89.0 | 5.0 | 5.0 | 9.875 | O | 35 |
| 10505 | 0.0 | 90.0 | 5.0 | 5.0 | 9.457 | O | 35 |
| 10506 | 26.0 | 59.0 | 10.0 | 5.0 | 19.353 | X | 69 |
| 10507 | 25.1 | 59.9 | 10.0 | 5.0 | 19.032 | X | 69 |
| 10508 | 25.0 | 60.0 | 10.0 | 5.0 | 18.996 | O | 69 |
| 10509 | 20.0 | 65.0 | 10.0 | 5.0 | 17.212 | O | 69 |
| 10510 | 10.0 | 75.0 | 10.0 | 5.0 | 13.617 | O | 69 |
| 10511 | 9.0 | 76.0 | 10.0 | 5.0 | 13.199 | O | 69 |
| 10512 | 8.0 | 77.0 | 10.0 | 5.0 | 12.781 | O | 69 |
| 10513 | 7.0 | 78.0 | 10.0 | 5.0 | 12.363 | O | 69 |
| 10514 | 6.0 | 79.0 | 10.0 | 5.0 | 11.946 | O | 69 |
| 10515 | 5.0 | 80.0 | 10.0 | 5.0 | 11.528 | O | 69 |
| 10516 | 4.0 | 81.0 | 10.0 | 5.0 | 11.110 | O | 69 |
| 10517 | 3.0 | 82.0 | 10.0 | 5.0 | 10.692 | O | 69 |
| 10518 | 2.0 | 83.0 | 10.0 | 5.0 | 10.274 | O | 69 |
| 10519 | 1.0 | 84.0 | 10.0 | 5.0 | 9.856 | O | 69 |
| 10520 | 0.0 | 85.0 | 10.0 | 5.0 | 9.438 | O | 69 |
| 10521 | 26.0 | 54.0 | 15.0 | 5.0 | 19.298 | X | 102 |
| 10522 | 25.2 | 54.8 | 15.0 | 5.0 | 19.013 | X | 102 |
| 10523 | 25.1 | 54.9 | 15.0 | 5.0 | 18.977 | O | 102 |

[Table 193]

| 10524 | 25.0 | 55.0 | 15.0 | 5.0 | 18.941 | O | 102 |
|---|---|---|---|---|---|---|---|
| 10525 | 20.0 | 60.0 | 15.0 | 5.0 | 17.157 | O | 102 |
| 10526 | 10.0 | 70.0 | 15.0 | 5.0 | 13.589 | O | 102 |
| 10527 | 9.0 | 71.0 | 15.0 | 5.0 | 13.180 | O | 102 |
| 10528 | 8.0 | 72.0 | 15.0 | 5.0 | 12.762 | O | 102 |
| 10529 | 7.0 | 73.0 | 15.0 | 5.0 | 12.344 | O | 102 |
| 10530 | 6.0 | 74.0 | 15.0 | 5.0 | 11.927 | O | 102 |
| 10531 | 5.0 | 75.0 | 15.0 | 5.0 | 11.509 | O | 102 |
| 10532 | 4.0 | 76.0 | 15.0 | 5.0 | 11.091 | O | 102 |
| 10533 | 3.0 | 77.0 | 15.0 | 5.0 | 10.673 | O | 102 |
| 10534 | 2.0 | 78.0 | 15.0 | 5.0 | 10.255 | O | 102 |
| 10535 | 1.0 | 79.0 | 15.0 | 5.0 | 9.837 | O | 102 |
| 10536 | 0.0 | 80.0 | 15.0 | 5.0 | 9.419 | O | 102 |
| 10537 | 26.0 | 49.0 | 20.0 | 5.0 | 19.243 | X | 136 |
| 10538 | 25.4 | 49.6 | 20.0 | 5.0 | 19.029 | X | 136 |
| 10539 | 25.3 | 49.7 | 20.0 | 5.0 | 18.993 | O | 136 |
| 10540 | 25.0 | 50.0 | 20.0 | 5.0 | 18.886 | O | 136 |
| 10541 | 20.0 | 55.0 | 20.0 | 5.0 | 17.102 | O | 136 |
| 10542 | 10.0 | 65.0 | 20.0 | 5.0 | 13.534 | O | 136 |
| 10543 | 9.0 | 66.0 | 20.0 | 5.0 | 13.161 | O | 136 |
| 10544 | 8.0 | 67.0 | 20.0 | 5.0 | 12.743 | O | 136 |
| 10545 | 7.0 | 68.0 | 20.0 | 5.0 | 12.325 | O | 136 |
| 10546 | 6.0 | 69.0 | 20.0 | 5.0 | 11.907 | O | 136 |
| 10547 | 5.0 | 70.0 | 20.0 | 5.0 | 11.490 | O | 136 |
| 10548 | 4.0 | 71.0 | 20.0 | 5.0 | 11.072 | O | 136 |
| 10549 | 3.0 | 72.0 | 20.0 | 5.0 | 10.654 | O | 136 |
| 10550 | 2.0 | 73.0 | 20.0 | 5.0 | 10.236 | O | 136 |
| 10551 | 1.0 | 74.0 | 20.0 | 5.0 | 9.818 | O | 136 |
| 10552 | 0.0 | 75.0 | 20.0 | 5.0 | 9.400 | O | 136 |
| 10553 | 26.0 | 47.0 | 22.0 | 5.0 | 19.221 | X | 150 |
| 10554 | 25.4 | 47.6 | 22.0 | 5.0 | 19.007 | X | 150 |
| 10555 | 25.3 | 47.7 | 22.0 | 5.0 | 18.971 | O | 150 |
| 10556 | 25.0 | 48.0 | 22.0 | 5.0 | 18.864 | O | 150 |
| 10557 | 20.0 | 53.0 | 22.0 | 5.0 | 17.080 | O | 150 |
| 10558 | 10.0 | 63.0 | 22.0 | 5.0 | 13.512 | O | 150 |
| 10559 | 9.0 | 64.0 | 22.0 | 5.0 | 13.154 | O | 150 |
| 10560 | 8.0 | 65.0 | 22.0 | 5.0 | 12.736 | O | 150 |
| 10561 | 7.0 | 66.0 | 22.0 | 5.0 | 12.318 | O | 150 |
| 10562 | 6.0 | 67.0 | 22.0 | 5.0 | 11.900 | O | 150 |
| 10563 | 5.0 | 68.0 | 22.0 | 5.0 | 11.482 | O | 150 |
| 10564 | 4.0 | 69.0 | 22.0 | 5.0 | 11.064 | O | 150 |
| 10565 | 3.0 | 70.0 | 22.0 | 5.0 | 10.646 | O | 150 |
| 10566 | 2.0 | 71.0 | 22.0 | 5.0 | 10.228 | O | 150 |
| 10567 | 1.0 | 72.0 | 22.0 | 5.0 | 9.810 | O | 150 |
| 10568 | 0.0 | 73.0 | 22.0 | 5.0 | 9.392 | O | 150 |
| 10569 | 27.0 | 61.0 | 2.0 | 10.0 | 19.332 | X | 15 |
| 10570 | 26.1 | 61.9 | 2.0 | 10.0 | 19.011 | X | 15 |
| 10571 | 26.0 | 62.0 | 2.0 | 10.0 | 18.976 | O | 15 |
| 10572 | 20.0 | 68.0 | 2.0 | 10.0 | 16.835 | O | 15 |
| 10573 | 10.0 | 78.0 | 2.0 | 10.0 | 13.195 | O | 15 |

[Table 194]

| 10574 | 9.0 | 79.0 | 2.0 | 10.0 | 12.777 | O | 15 |
| 10575 | 8.0 | 80.0 | 2.0 | 10.0 | 12.359 | O | 15 |
| 10576 | 7.0 | 81.0 | 2.0 | 10.0 | 11.941 | O | 15 |
| 10577 | 6.0 | 82.0 | 2.0 | 10.0 | 11.523 | O | 15 |
| 10578 | 5.0 | 83.0 | 2.0 | 10.0 | 11.106 | O | 15 |
| 10579 | 4.0 | 84.0 | 2.0 | 10.0 | 10.688 | O | 15 |
| 10580 | 3.0 | 85.0 | 2.0 | 10.0 | 10.270 | O | 15 |
| 10581 | 2.0 | 86.0 | 2.0 | 10.0 | 9.852 | O | 15 |
| 10582 | 1.0 | 87.0 | 2.0 | 10.0 | 9.434 | O | 15 |
| 10583 | 0.0 | 88.0 | 2.0 | 10.0 | 9.016 | O | 15 |
| 10584 | 27.0 | 58.0 | 5.0 | 10.0 | 19.299 | X | 35 |
| 10585 | 26.2 | 58.8 | 5.0 | 10.0 | 19.014 | X | 35 |
| 10586 | 26.1 | 58.9 | 5.0 | 10.0 | 18.978 | O | 35 |
| 10587 | 26.0 | 59.0 | 5.0 | 10.0 | 18.942 | O | 35 |
| 10588 | 20.0 | 65.0 | 5.0 | 10.0 | 16.802 | O | 35 |
| 10589 | 10.0 | 75.0 | 5.0 | 10.0 | 13.184 | O | 35 |
| 10590 | 9.0 | 76.0 | 5.0 | 10.0 | 12.766 | O | 35 |
| 10591 | 8.0 | 77.0 | 5.0 | 10.0 | 12.348 | O | 35 |
| 10592 | 7.0 | 78.0 | 5.0 | 10.0 | 11.930 | O | 35 |
| 10593 | 6.0 | 79.0 | 5.0 | 10.0 | 11.512 | O | 35 |
| 10594 | 5.0 | 80.0 | 5.0 | 10.0 | 11.094 | O | 35 |
| 10595 | 4.0 | 81.0 | 5.0 | 10.0 | 10.676 | O | 35 |
| 10596 | 3.0 | 82.0 | 5.0 | 10.0 | 10.258 | O | 35 |
| 10597 | 2.0 | 83.0 | 5.0 | 10.0 | 9.840 | O | 35 |
| 10598 | 1.0 | 84.0 | 5.0 | 10.0 | 9.422 | O | 35 |
| 10599 | 0.0 | 85.0 | 5.0 | 10.0 | 9.004 | O | 35 |
| 10600 | 27.0 | 53.0 | 10.0 | 10.0 | 19.244 | X | 69 |
| 10601 | 26.4 | 53.6 | 10.0 | 10.0 | 19.030 | X | 69 |
| 10602 | 26.3 | 53.7 | 10.0 | 10.0 | 18.994 | O | 69 |
| 10603 | 26.0 | 54.0 | 10.0 | 10.0 | 18.887 | O | 69 |
| 10604 | 20.0 | 60.0 | 10.0 | 10.0 | 16.746 | O | 69 |
| 10605 | 10.0 | 70.0 | 10.0 | 10.0 | 13.165 | O | 69 |
| 10606 | 9.0 | 71.0 | 10.0 | 10.0 | 12.747 | O | 69 |
| 10607 | 8.0 | 72.0 | 10.0 | 10.0 | 12.329 | O | 69 |
| 10608 | 7.0 | 73.0 | 10.0 | 10.0 | 11.911 | O | 69 |
| 10609 | 6.0 | 74.0 | 10.0 | 10.0 | 11.493 | O | 69 |
| 10610 | 5.0 | 75.0 | 10.0 | 10.0 | 11.075 | O | 69 |
| 10611 | 4.0 | 76.0 | 10.0 | 10.0 | 10.657 | O | 69 |
| 10612 | 3.0 | 77.0 | 10.0 | 10.0 | 10.239 | O | 69 |
| 10613 | 2.0 | 78.0 | 10.0 | 10.0 | 9.821 | O | 69 |
| 10614 | 1.0 | 79.0 | 10.0 | 10.0 | 9.403 | O | 69 |
| 10615 | 0.0 | 80.0 | 10.0 | 10.0 | 8.985 | O | 69 |
| 10616 | 27.0 | 48.0 | 15.0 | 10.0 | 19.189 | X | 102 |
| 10617 | 26.5 | 48.5 | 15.0 | 10.0 | 19.010 | X | 102 |
| 10618 | 26.4 | 48.6 | 15.0 | 10.0 | 18.975 | O | 102 |
| 10619 | 26.0 | 49.0 | 15.0 | 10.0 | 18.832 | O | 102 |
| 10620 | 20.0 | 55.0 | 15.0 | 10.0 | 16.691 | O | 102 |
| 10621 | 10.0 | 65.0 | 15.0 | 10.0 | 13.123 | O | 102 |
| 10622 | 9.0 | 66.0 | 15.0 | 10.0 | 12.728 | O | 102 |
| 10623 | 8.0 | 67.0 | 15.0 | 10.0 | 12.310 | O | 102 |

[Table 195]

| 10624 | 7.0 | 68.0 | 15.0 | 10.0 | 11.892 | O | 102 |
|---|---|---|---|---|---|---|---|
| 10625 | 6.0 | 69.0 | 15.0 | 10.0 | 11.474 | O | 102 |
| 10626 | 5.0 | 70.0 | 15.0 | 10.0 | 11.056 | O | 102 |
| 10627 | 4.0 | 71.0 | 15.0 | 10.0 | 10.638 | O | 102 |
| 10628 | 3.0 | 72.0 | 15.0 | 10.0 | 10.220 | O | 102 |
| 10629 | 2.0 | 73.0 | 15.0 | 10.0 | 9.802 | O | 102 |
| 10630 | 1.0 | 74.0 | 15.0 | 10.0 | 9.384 | O | 102 |
| 10631 | 0.0 | 75.0 | 15.0 | 10.0 | 8.966 | O | 102 |
| 10632 | 27.0 | 43.0 | 20.0 | 10.0 | 19.134 | X | 136 |
| 10633 | 26.7 | 43.3 | 20.0 | 10.0 | 19.026 | X | 136 |
| 10634 | 26.6 | 43.4 | 20.0 | 10.0 | 18.991 | O | 136 |
| 10635 | 26.0 | 44.0 | 20.0 | 10.0 | 18.777 | O | 136 |
| 10636 | 20.0 | 50.0 | 20.0 | 10.0 | 16.636 | O | 136 |
| 10637 | 10.0 | 60.0 | 20.0 | 10.0 | 13.068 | O | 136 |
| 10638 | 9.0 | 61.0 | 20.0 | 10.0 | 12.709 | O | 136 |
| 10639 | 8.0 | 62.0 | 20.0 | 10.0 | 12.291 | O | 136 |
| 10640 | 7.0 | 63.0 | 20.0 | 10.0 | 11.873 | O | 136 |
| 10641 | 6.0 | 64.0 | 20.0 | 10.0 | 11.455 | O | 136 |
| 10642 | 5.0 | 65.0 | 20.0 | 10.0 | 11.037 | O | 136 |
| 10643 | 4.0 | 66.0 | 20.0 | 10.0 | 10.619 | O | 136 |
| 10644 | 3.0 | 67.0 | 20.0 | 10.0 | 10.201 | O | 136 |
| 10645 | 2.0 | 68.0 | 20.0 | 10.0 | 9.783 | O | 136 |
| 10646 | 1.0 | 69.0 | 20.0 | 10.0 | 9.365 | O | 136 |
| 10647 | 0.0 | 70.0 | 20.0 | 10.0 | 8.947 | O | 136 |
| 10648 | 27.0 | 41.0 | 22.0 | 10.0 | 19.111 | X | 150 |
| 10649 | 26.7 | 41.3 | 22.0 | 10.0 | 19.004 | X | 150 |
| 10650 | 26.6 | 41.4 | 22.0 | 10.0 | 18.969 | O | 150 |
| 10651 | 26.0 | 42.0 | 22.0 | 10.0 | 18.755 | O | 150 |
| 10652 | 20.0 | 48.0 | 22.0 | 10.0 | 16.614 | O | 150 |
| 10653 | 10.0 | 58.0 | 22.0 | 10.0 | 13.046 | O | 150 |
| 10654 | 9.0 | 59.0 | 22.0 | 10.0 | 12.689 | O | 150 |
| 10655 | 8.0 | 60.0 | 22.0 | 10.0 | 12.283 | O | 150 |
| 10656 | 7.0 | 61.0 | 22.0 | 10.0 | 11.865 | O | 150 |
| 10657 | 6.0 | 62.0 | 22.0 | 10.0 | 11.447 | O | 150 |
| 10658 | 5.0 | 63.0 | 22.0 | 10.0 | 11.029 | O | 150 |
| 10659 | 4.0 | 64.0 | 22.0 | 10.0 | 10.611 | O | 150 |
| 10660 | 3.0 | 65.0 | 22.0 | 10.0 | 10.193 | O | 150 |
| 10661 | 2.0 | 66.0 | 22.0 | 10.0 | 9.776 | O | 150 |
| 10662 | 1.0 | 67.0 | 22.0 | 10.0 | 9.358 | O | 150 |
| 10663 | 0.0 | 68.0 | 22.0 | 10.0 | 8.940 | O | 150 |
| 10664 | 29.0 | 49.0 | 2.0 | 20.0 | 19.114 | X | 15 |
| 10665 | 28.7 | 49.3 | 2.0 | 20.0 | 19.007 | X | 15 |
| 10666 | 28.6 | 49.4 | 2.0 | 20.0 | 18.971 | O | 15 |
| 10667 | 28.0 | 50.0 | 2.0 | 20.0 | 18.757 | O | 15 |
| 10668 | 20.0 | 58.0 | 2.0 | 20.0 | 15.903 | O | 15 |
| 10669 | 10.0 | 68.0 | 2.0 | 20.0 | 12.290 | O | 15 |
| 10670 | 9.0 | 69.0 | 2.0 | 20.0 | 11.872 | O | 15 |
| 10671 | 8.0 | 70.0 | 2.0 | 20.0 | 11.454 | O | 15 |
| 10672 | 7.0 | 71.0 | 2.0 | 20.0 | 11.036 | O | 15 |
| 10673 | 6.0 | 72.0 | 2.0 | 20.0 | 10.618 | O | 15 |

[Table 196]

| 10674 | 5.0 | 73.0 | 2.0 | 20.0 | 10.200 | O | 15 |
| 10675 | 4.0 | 74.0 | 2.0 | 20.0 | 9.782 | O | 15 |
| 10676 | 3.0 | 75.0 | 2.0 | 20.0 | 9.364 | O | 15 |
| 10677 | 2.0 | 76.0 | 2.0 | 20.0 | 8.946 | O | 15 |
| 10678 | 1.0 | 77.0 | 2.0 | 20.0 | 8.529 | O | 15 |
| 10679 | 0.0 | 78.0 | 2.0 | 20.0 | 8.111 | O | 15 |
| 10680 | 29.0 | 46.0 | 5.0 | 20.0 | 19.081 | X | 35 |
| 10681 | 28.8 | 46.2 | 5.0 | 20.0 | 19.009 | X | 35 |
| 10682 | 28.7 | 46.3 | 5.0 | 20.0 | 18.974 | O | 35 |
| 10683 | 28.0 | 47.0 | 5.0 | 20.0 | 18.724 | O | 35 |
| 10684 | 20.0 | 55.0 | 5.0 | 20.0 | 15.869 | O | 35 |
| 10685 | 10.0 | 65.0 | 5.0 | 20.0 | 12.278 | O | 35 |
| 10686 | 9.0 | 66.0 | 5.0 | 20.0 | 11.860 | O | 35 |
| 10687 | 8.0 | 67.0 | 5.0 | 20.0 | 11.443 | O | 35 |
| 10688 | 7.0 | 68.0 | 5.0 | 20.0 | 11.025 | O | 35 |
| 10689 | 6.0 | 69.0 | 5.0 | 20.0 | 10.607 | O | 35 |
| 10690 | 5.0 | 70.0 | 5.0 | 20.0 | 10.189 | O | 35 |
| 10691 | 4.0 | 71.0 | 5.0 | 20.0 | 9.771 | O | 35 |
| 10692 | 3.0 | 72.0 | 5.0 | 20.0 | 9.353 | O | 35 |
| 10693 | 2.0 | 73.0 | 5.0 | 20.0 | 8.935 | O | 35 |
| 10694 | 1.0 | 74.0 | 5.0 | 20.0 | 8.517 | O | 35 |
| 10695 | 0.0 | 75.0 | 5.0 | 20.0 | 8.099 | O | 35 |
| 10696 | 29.0 | 41.0 | 10.0 | 20.0 | 19.025 | X | 69 |
| 10697 | 28.9 | 41.1 | 10.0 | 20.0 | 18.990 | O | 69 |
| 10698 | 28.0 | 42.0 | 10.0 | 20.0 | 18.669 | O | 69 |
| 10699 | 20.0 | 50.0 | 10.0 | 20.0 | 15.814 | O | 69 |
| 10700 | 10.0 | 60.0 | 10.0 | 20.0 | 12.246 | O | 69 |
| 10701 | 9.0 | 61.0 | 10.0 | 20.0 | 11.841 | O | 69 |
| 10702 | 8.0 | 62.0 | 10.0 | 20.0 | 11.424 | O | 69 |
| 10703 | 7.0 | 63.0 | 10.0 | 20.0 | 11.006 | O | 69 |
| 10704 | 6.0 | 64.0 | 10.0 | 20.0 | 10.588 | O | 69 |
| 10705 | 5.0 | 65.0 | 10.0 | 20.0 | 10.170 | O | 69 |
| 10706 | 4.0 | 66.0 | 10.0 | 20.0 | 9.752 | O | 69 |
| 10707 | 3.0 | 67.0 | 10.0 | 20.0 | 9.334 | O | 69 |
| 10708 | 2.0 | 68.0 | 10.0 | 20.0 | 8.916 | O | 69 |
| 10709 | 1.0 | 69.0 | 10.0 | 20.0 | 8.498 | O | 69 |
| 10710 | 0.0 | 70.0 | 10.0 | 20.0 | 8.080 | O | 69 |
| 10711 | 30.0 | 35.0 | 15.0 | 20.0 | 19.327 | X | 102 |
| 10712 | 29.1 | 35.9 | 15.0 | 20.0 | 19.006 | X | 102 |
| 10713 | 29.0 | 36.0 | 15.0 | 20.0 | 18.970 | O | 102 |
| 10714 | 20.0 | 45.0 | 15.0 | 20.0 | 15.759 | O | 102 |
| 10715 | 10.0 | 55.0 | 15.0 | 20.0 | 12.191 | O | 102 |
| 10716 | 9.0 | 56.0 | 15.0 | 20.0 | 11.822 | O | 102 |
| 10717 | 8.0 | 57.0 | 15.0 | 20.0 | 11.404 | O | 102 |
| 10718 | 7.0 | 58.0 | 15.0 | 20.0 | 10.987 | O | 102 |
| 10719 | 6.0 | 59.0 | 15.0 | 20.0 | 10.569 | O | 102 |
| 10720 | 5.0 | 60.0 | 15.0 | 20.0 | 10.151 | O | 102 |
| 10721 | 4.0 | 61.0 | 15.0 | 20.0 | 9.733 | O | 102 |
| 10722 | 3.0 | 62.0 | 15.0 | 20.0 | 9.315 | O | 102 |
| 10723 | 2.0 | 63.0 | 15.0 | 20.0 | 8.897 | O | 102 |

[Table 197]

| 10724 | 1.0 | 64.0 | 15.0 | 20.0 | 8.479 | O | 102 |
|---|---|---|---|---|---|---|---|
| 10725 | 0.0 | 65.0 | 15.0 | 20.0 | 8.061 | O | 102 |
| 10726 | 30.0 | 30.0 | 20.0 | 20.0 | 19.272 | X | 136 |
| 10727 | 29.3 | 30.7 | 20.0 | 20.0 | 19.022 | X | 136 |
| 10728 | 29.2 | 30.8 | 20.0 | 20.0 | 18.986 | O | 136 |
| 10729 | 29.0 | 31.0 | 20.0 | 20.0 | 18.915 | O | 136 |
| 10730 | 20.0 | 40.0 | 20.0 | 20.0 | 15.704 | O | 136 |
| 10731 | 10.0 | 50.0 | 20.0 | 20.0 | 12.135 | O | 136 |
| 10732 | 9.0 | 51.0 | 20.0 | 20.0 | 11.779 | O | 136 |
| 10733 | 8.0 | 52.0 | 20.0 | 20.0 | 11.385 | O | 136 |
| 10734 | 7.0 | 53.0 | 20.0 | 20.0 | 10.967 | O | 136 |
| 10735 | 6.0 | 54.0 | 20.0 | 20.0 | 10.550 | O | 136 |
| 10736 | 5.0 | 55.0 | 20.0 | 20.0 | 10.132 | O | 136 |
| 10737 | 4.0 | 56.0 | 20.0 | 20.0 | 9.714 | O | 136 |
| 10738 | 3.0 | 57.0 | 20.0 | 20.0 | 9.296 | O | 136 |
| 10739 | 2.0 | 58.0 | 20.0 | 20.0 | 8.878 | O | 136 |
| 10740 | 1.0 | 59.0 | 20.0 | 20.0 | 8.460 | O | 136 |
| 10741 | 0.0 | 60.0 | 20.0 | 20.0 | 8.042 | O | 136 |
| 10742 | 30.0 | 28.0 | 22.0 | 20.0 | 19.250 | X | 150 |
| 10743 | 29.3 | 28.7 | 22.0 | 20.0 | 19.000 | X | 150 |
| 10744 | 29.2 | 28.8 | 22.0 | 20.0 | 18.964 | O | 150 |
| 10745 | 29.0 | 29.0 | 22.0 | 20.0 | 18.893 | O | 150 |
| 10746 | 20.0 | 38.0 | 22.0 | 20.0 | 15.682 | O | 150 |
| 10747 | 10.0 | 48.0 | 22.0 | 20.0 | 12.113 | O | 150 |
| 10748 | 9.0 | 49.0 | 22.0 | 20.0 | 11.757 | O | 150 |
| 10749 | 8.0 | 50.0 | 22.0 | 20.0 | 11.378 | O | 150 |
| 10750 | 7.0 | 51.0 | 22.0 | 20.0 | 10.960 | O | 150 |
| 10751 | 6.0 | 52.0 | 22.0 | 20.0 | 10.542 | O | 150 |
| 10752 | 5.0 | 53.0 | 22.0 | 20.0 | 10.124 | O | 150 |
| 10753 | 4.0 | 54.0 | 22.0 | 20.0 | 9.706 | O | 150 |
| 10754 | 3.0 | 55.0 | 22.0 | 20.0 | 9.288 | O | 150 |
| 10755 | 2.0 | 56.0 | 22.0 | 20.0 | 8.870 | O | 150 |
| 10756 | 1.0 | 57.0 | 22.0 | 20.0 | 8.452 | O | 150 |
| 10757 | 0.0 | 58.0 | 22.0 | 20.0 | 8.034 | O | 150 |
| 10758 | 32.0 | 36.0 | 2.0 | 30.0 | 19.252 | X | 15 |
| 10759 | 31.3 | 36.7 | 2.0 | 30.0 | 19.002 | X | 15 |
| 10760 | 31.2 | 36.8 | 2.0 | 30.0 | 18.967 | O | 15 |
| 10761 | 31.0 | 37.0 | 2.0 | 30.0 | 18.895 | O | 15 |
| 10762 | 30.0 | 38.0 | 2.0 | 30.0 | 18.538 | O | 15 |
| 10763 | 20.0 | 48.0 | 2.0 | 30.0 | 14.970 | O | 15 |
| 10764 | 10.0 | 58.0 | 2.0 | 30.0 | 11.385 | O | 15 |
| 10765 | 9.0 | 59.0 | 2.0 | 30.0 | 10.967 | O | 15 |
| 10766 | 8.0 | 60.0 | 2.0 | 30.0 | 10.549 | O | 15 |
| 10767 | 7.0 | 61.0 | 2.0 | 30.0 | 10.131 | O | 15 |
| 10768 | 6.0 | 62.0 | 2.0 | 30.0 | 9.713 | O | 15 |
| 10769 | 5.0 | 63.0 | 2.0 | 30.0 | 9.295 | O | 15 |
| 10770 | 4.0 | 64.0 | 2.0 | 30.0 | 8.877 | O | 15 |
| 10771 | 3.0 | 65.0 | 2.0 | 30.0 | 8.459 | O | 15 |
| 10772 | 2.0 | 66.0 | 2.0 | 30.0 | 8.041 | O | 15 |
| 10773 | 1.0 | 67.0 | 2.0 | 30.0 | 7.623 | O | 15 |

[Table 198]

215

| 10774 | 0.0 | 68.0 | 2.0 | 30.0 | 7.205 | O | 15 |
|---|---|---|---|---|---|---|---|
| 10775 | 32.0 | 33.0 | 5.0 | 30.0 | 19.219 | X | 35 |
| 10776 | 31.4 | 33.6 | 5.0 | 30.0 | 19.005 | X | 35 |
| 10777 | 31.3 | 33.7 | 5.0 | 30.0 | 18.969 | O | 35 |
| 10778 | 31.0 | 34.0 | 5.0 | 30.0 | 18.862 | O | 35 |
| 10779 | 30.0 | 35.0 | 5.0 | 30.0 | 18.505 | O | 35 |
| 10780 | 20.0 | 45.0 | 5.0 | 30.0 | 14.937 | O | 35 |
| 10781 | 10.0 | 55.0 | 5.0 | 30.0 | 11.369 | O | 35 |
| 10782 | 9.0 | 56.0 | 5.0 | 30.0 | 10.955 | O | 35 |
| 10783 | 8.0 | 57.0 | 5.0 | 30.0 | 10.537 | O | 35 |
| 10784 | 7.0 | 58.0 | 5.0 | 30.0 | 10.119 | O | 35 |
| 10785 | 6.0 | 59.0 | 5.0 | 30.0 | 9.701 | O | 35 |
| 10786 | 5.0 | 60.0 | 5.0 | 30.0 | 9.284 | O | 35 |
| 10787 | 4.0 | 61.0 | 5.0 | 30.0 | 8.866 | O | 35 |
| 10788 | 3.0 | 62.0 | 5.0 | 30.0 | 8.448 | O | 35 |
| 10789 | 2.0 | 63.0 | 5.0 | 30.0 | 8.030 | O | 35 |
| 10790 | 1.0 | 64.0 | 5.0 | 30.0 | 7.612 | O | 35 |
| 10791 | 0.0 | 65.0 | 5.0 | 30.0 | 7.194 | O | 35 |
| 10792 | 32.0 | 28.0 | 10.0 | 30.0 | 19.164 | X | 69 |
| 10793 | 31.6 | 28.4 | 10.0 | 30.0 | 19.021 | X | 69 |
| 10794 | 31.5 | 28.5 | 10.0 | 30.0 | 18.985 | O | 69 |
| 10795 | 31.0 | 29.0 | 10.0 | 30.0 | 18.807 | O | 69 |
| 10796 | 30.0 | 30.0 | 10.0 | 30.0 | 18.450 | O | 69 |
| 10797 | 20.0 | 40.0 | 10.0 | 30.0 | 14.882 | O | 69 |
| 10798 | 10.0 | 50.0 | 10.0 | 30.0 | 11.314 | O | 69 |
| 10799 | 9.0 | 51.0 | 10.0 | 30.0 | 10.936 | O | 69 |
| 10800 | 8.0 | 52.0 | 10.0 | 30.0 | 10.518 | O | 69 |
| 10801 | 7.0 | 53.0 | 10.0 | 30.0 | 10.100 | O | 69 |
| 10802 | 6.0 | 54.0 | 10.0 | 30.0 | 9.682 | O | 69 |
| 10803 | 5.0 | 55.0 | 10.0 | 30.0 | 9.264 | O | 69 |
| 10804 | 4.0 | 56.0 | 10.0 | 30.0 | 8.847 | O | 69 |
| 10805 | 3.0 | 57.0 | 10.0 | 30.0 | 8.429 | O | 69 |
| 10806 | 2.0 | 58.0 | 10.0 | 30.0 | 8.011 | O | 69 |
| 10807 | 1.0 | 59.0 | 10.0 | 30.0 | 7.593 | O | 69 |
| 10808 | 0.0 | 60.0 | 10.0 | 30.0 | 7.175 | O | 69 |
| 10809 | 32.0 | 23.0 | 15.0 | 30.0 | 19.108 | X | 102 |
| 10810 | 31.7 | 23.3 | 15.0 | 30.0 | 19.001 | X | 102 |
| 10811 | 31.6 | 23.4 | 15.0 | 30.0 | 18.966 | O | 102 |
| 10812 | 31.0 | 24.0 | 15.0 | 30.0 | 18.752 | O | 102 |
| 10813 | 30.0 | 25.0 | 15.0 | 30.0 | 18.395 | O | 102 |
| 10814 | 20.0 | 35.0 | 15.0 | 30.0 | 14.827 | O | 102 |
| 10815 | 10.0 | 45.0 | 15.0 | 30.0 | 11.259 | O | 102 |
| 10816 | 9.0 | 46.0 | 15.0 | 30.0 | 10.902 | O | 102 |
| 10817 | 8.0 | 47.0 | 15.0 | 30.0 | 10.499 | O | 102 |
| 10818 | 7.0 | 48.0 | 15.0 | 30.0 | 10.081 | O | 102 |
| 10819 | 6.0 | 49.0 | 15.0 | 30.0 | 9.663 | O | 102 |
| 10820 | 5.0 | 50.0 | 15.0 | 30.0 | 9.245 | O | 102 |
| 10821 | 4.0 | 51.0 | 15.0 | 30.0 | 8.828 | O | 102 |
| 10822 | 3.0 | 52.0 | 15.0 | 30.0 | 8.410 | O | 102 |
| 10823 | 2.0 | 53.0 | 15.0 | 30.0 | 7.992 | O | 102 |

[Table 199]

| 10824 | 1.0 | 54.0 | 15.0 | 30.0 | 7.574 | O | 102 |
|---|---|---|---|---|---|---|---|
| 10825 | 0.0 | 55.0 | 15.0 | 30.0 | 7.156 | O | 102 |
| 10826 | 32.0 | 18.0 | 20.0 | 30.0 | 19.053 | X | 136 |
| 10827 | 31.9 | 18.1 | 20.0 | 30.0 | 19.018 | X | 136 |
| 10828 | 31.8 | 18.2 | 20.0 | 30.0 | 18.982 | O | 136 |
| 10829 | 31.0 | 19.0 | 20.0 | 30.0 | 18.696 | O | 136 |
| 10830 | 30.0 | 20.0 | 20.0 | 30.0 | 18.340 | O | 136 |
| 10831 | 20.0 | 30.0 | 20.0 | 30.0 | 14.771 | O | 136 |
| 10832 | 10.0 | 40.0 | 20.0 | 30.0 | 11.203 | O | 136 |
| 10833 | 9.0 | 41.0 | 20.0 | 30.0 | 10.846 | O | 136 |
| 10834 | 8.0 | 42.0 | 20.0 | 30.0 | 10.480 | O | 136 |
| 10835 | 7.0 | 43.0 | 20.0 | 30.0 | 10.062 | O | 136 |
| 10836 | 6.0 | 44.0 | 20.0 | 30.0 | 9.644 | O | 136 |
| 10837 | 5.0 | 45.0 | 20.0 | 30.0 | 9.226 | O | 136 |
| 10838 | 4.0 | 46.0 | 20.0 | 30.0 | 8.808 | O | 136 |
| 10839 | 3.0 | 47.0 | 20.0 | 30.0 | 8.391 | O | 136 |
| 10840 | 2.0 | 48.0 | 20.0 | 30.0 | 7.973 | O | 136 |
| 10841 | 1.0 | 49.0 | 20.0 | 30.0 | 7.555 | O | 136 |
| 10842 | 0.0 | 50.0 | 20.0 | 30.0 | 7.137 | O | 136 |
| 10843 | 32.0 | 16.0 | 22.0 | 30.0 | 19.031 | X | 150 |
| 10844 | 31.9 | 16.1 | 22.0 | 30.0 | 18.995 | O | 150 |
| 10845 | 31.0 | 17.0 | 22.0 | 30.0 | 18.674 | O | 150 |
| 10846 | 30.0 | 18.0 | 22.0 | 30.0 | 18.317 | O | 150 |
| 10847 | 20.0 | 28.0 | 22.0 | 30.0 | 14.749 | O | 150 |
| 10848 | 10.0 | 38.0 | 22.0 | 30.0 | 11.181 | O | 150 |
| 10849 | 9.0 | 39.0 | 22.0 | 30.0 | 10.824 | O | 150 |
| 10850 | 8.0 | 40.0 | 22.0 | 30.0 | 10.468 | O | 150 |
| 10851 | 7.0 | 41.0 | 22.0 | 30.0 | 10.055 | O | 150 |
| 10852 | 6.0 | 42.0 | 22.0 | 30.0 | 9.637 | O | 150 |
| 10853 | 5.0 | 43.0 | 22.0 | 30.0 | 9.219 | O | 150 |
| 10854 | 4.0 | 44.0 | 22.0 | 30.0 | 8.801 | O | 150 |
| 10855 | 3.0 | 45.0 | 22.0 | 30.0 | 8.383 | O | 150 |
| 10856 | 2.0 | 46.0 | 22.0 | 30.0 | 7.965 | O | 150 |
| 10857 | 1.0 | 47.0 | 22.0 | 30.0 | 7.547 | O | 150 |
| 10858 | 0.0 | 48.0 | 22.0 | 30.0 | 7.129 | O | 150 |
| 10859 | 34.0 | 24.0 | 2.0 | 40.0 | 19.034 | X | 15 |
| 10860 | 33.9 | 24.1 | 2.0 | 40.0 | 18.998 | O | 15 |
| 10861 | 33.0 | 25.0 | 2.0 | 40.0 | 18.677 | O | 15 |
| 10862 | 30.0 | 28.0 | 2.0 | 40.0 | 17.606 | O | 15 |
| 10863 | 20.0 | 38.0 | 2.0 | 40.0 | 14.038 | O | 15 |
| 10864 | 10.0 | 48.0 | 2.0 | 40.0 | 10.470 | O | 15 |
| 10865 | 9.0 | 49.0 | 2.0 | 40.0 | 10.061 | O | 15 |
| 10866 | 8.0 | 50.0 | 2.0 | 40.0 | 9.643 | O | 15 |
| 10867 | 7.0 | 51.0 | 2.0 | 40.0 | 9.226 | O | 15 |
| 10868 | 6.0 | 52.0 | 2.0 | 40.0 | 8.808 | O | 15 |
| 10869 | 5.0 | 53.0 | 2.0 | 40.0 | 8.390 | O | 15 |
| 10870 | 4.0 | 54.0 | 2.0 | 40.0 | 7.972 | O | 15 |
| 10871 | 3.0 | 55.0 | 2.0 | 40.0 | 7.554 | O | 15 |
| 10872 | 2.0 | 56.0 | 2.0 | 40.0 | 7.136 | O | 15 |
| 10873 | 1.0 | 57.0 | 2.0 | 40.0 | 6.718 | O | 15 |

[Table 200]

| 10874 | 0.0 | 58.0 | 2.0 | 40.0 | 6.300 | O | 15 |
|---|---|---|---|---|---|---|---|
| 10875 | 34.0 | 21.0 | 5.0 | 40.0 | 19.000 | X | 35 |
| 10876 | 33.9 | 21.1 | 5.0 | 40.0 | 18.965 | O | 35 |
| 10877 | 33.0 | 22.0 | 5.0 | 40.0 | 18.644 | O | 35 |
| 10878 | 30.0 | 25.0 | 5.0 | 40.0 | 17.573 | O | 35 |
| 10879 | 20.0 | 35.0 | 5.0 | 40.0 | 14.005 | O | 35 |
| 10880 | 10.0 | 45.0 | 5.0 | 40.0 | 10.437 | O | 35 |
| 10881 | 9.0 | 46.0 | 5.0 | 40.0 | 10.050 | O | 35 |
| 10882 | 8.0 | 47.0 | 5.0 | 40.0 | 9.632 | O | 35 |
| 10883 | 7.0 | 48.0 | 5.0 | 40.0 | 9.214 | O | 35 |
| 10884 | 6.0 | 49.0 | 5.0 | 40.0 | 8.796 | O | 35 |
| 10885 | 5.0 | 50.0 | 5.0 | 40.0 | 8.378 | O | 35 |
| 10886 | 4.0 | 51.0 | 5.0 | 40.0 | 7.960 | O | 35 |
| 10887 | 3.0 | 52.0 | 5.0 | 40.0 | 7.542 | O | 35 |
| 10888 | 2.0 | 53.0 | 5.0 | 40.0 | 7.125 | O | 35 |
| 10889 | 1.0 | 54.0 | 5.0 | 40.0 | 6.707 | O | 35 |
| 10890 | 0.0 | 55.0 | 5.0 | 40.0 | 6.289 | O | 35 |
| 10891 | 35.0 | 15.0 | 10.0 | 40.0 | 19.302 | X | 69 |
| 10892 | 34.2 | 15.8 | 10.0 | 40.0 | 19.017 | X | 69 |
| 10893 | 34.1 | 15.9 | 10.0 | 40.0 | 18.981 | O | 69 |
| 10894 | 34.0 | 16.0 | 10.0 | 40.0 | 18.945 | O | 69 |
| 10895 | 30.0 | 20.0 | 10.0 | 40.0 | 17.518 | O | 69 |
| 10896 | 20.0 | 30.0 | 10.0 | 40.0 | 13.950 | O | 69 |
| 10897 | 10.0 | 40.0 | 10.0 | 40.0 | 10.382 | O | 69 |
| 10898 | 9.0 | 41.0 | 10.0 | 40.0 | 10.025 | O | 69 |
| 10899 | 8.0 | 42.0 | 10.0 | 40.0 | 9.613 | O | 69 |
| 10900 | 7.0 | 43.0 | 10.0 | 40.0 | 9.195 | O | 69 |
| 10901 | 6.0 | 44.0 | 10.0 | 40.0 | 8.777 | O | 69 |
| 10902 | 5.0 | 45.0 | 10.0 | 40.0 | 8.359 | O | 69 |
| 10903 | 4.0 | 46.0 | 10.0 | 40.0 | 7.941 | O | 69 |
| 10904 | 3.0 | 47.0 | 10.0 | 40.0 | 7.523 | O | 69 |
| 10905 | 2.0 | 48.0 | 10.0 | 40.0 | 7.105 | O | 69 |
| 10906 | 1.0 | 49.0 | 10.0 | 40.0 | 6.688 | O | 69 |
| 10907 | 0.0 | 50.0 | 10.0 | 40.0 | 6.270 | O | 69 |
| 10908 | 35.0 | 10.0 | 15.0 | 40.0 | 19.247 | X | 102 |
| 10909 | 34.4 | 10.6 | 15.0 | 40.0 | 19.033 | X | 102 |
| 10910 | 34.3 | 10.7 | 15.0 | 40.0 | 18.997 | O | 102 |
| 10911 | 34.0 | 11.0 | 15.0 | 40.0 | 18.890 | O | 102 |
| 10912 | 30.0 | 15.0 | 15.0 | 40.0 | 17.463 | O | 102 |
| 10913 | 20.0 | 25.0 | 15.0 | 40.0 | 13.894 | O | 102 |
| 10914 | 10.0 | 35.0 | 15.0 | 40.0 | 10.326 | O | 102 |
| 10915 | 9.0 | 36.0 | 15.0 | 40.0 | 9.970 | O | 102 |
| 10916 | 8.0 | 37.0 | 15.0 | 40.0 | 9.594 | O | 102 |
| 10917 | 7.0 | 38.0 | 15.0 | 40.0 | 9.176 | O | 102 |
| 10918 | 6.0 | 39.0 | 15.0 | 40.0 | 8.758 | O | 102 |
| 10919 | 5.0 | 40.0 | 15.0 | 40.0 | 8.340 | O | 102 |
| 10920 | 4.0 | 41.0 | 15.0 | 40.0 | 7.922 | O | 102 |
| 10921 | 3.0 | 42.0 | 15.0 | 40.0 | 7.504 | O | 102 |
| 10922 | 2.0 | 43.0 | 15.0 | 40.0 | 7.086 | O | 102 |
| 10923 | 1.0 | 44.0 | 15.0 | 40.0 | 6.669 | O | 102 |

[Table 201]

| 10924 | 0.0 | 45.0 | 15.0 | 40.0 | 6.251 | O | 102 |
|---|---|---|---|---|---|---|---|
| 10925 | 35.0 | 5.0 | 20.0 | 40.0 | 19.191 | X | 136 |
| 10926 | 34.5 | 5.5 | 20.0 | 40.0 | 19.013 | X | 136 |
| 10927 | 34.4 | 5.6 | 20.0 | 40.0 | 18.977 | O | 136 |
| 10928 | 34.0 | 6.0 | 20.0 | 40.0 | 18.835 | O | 136 |
| 10929 | 30.0 | 10.0 | 20.0 | 40.0 | 17.407 | O | 136 |
| 10930 | 20.0 | 20.0 | 20.0 | 40.0 | 13.839 | O | 136 |
| 10931 | 10.0 | 30.0 | 20.0 | 40.0 | 10.271 | O | 136 |
| 10932 | 9.0 | 31.0 | 20.0 | 40.0 | 9.914 | O | 136 |
| 10933 | 8.0 | 32.0 | 20.0 | 40.0 | 9.557 | O | 136 |
| 10934 | 7.0 | 33.0 | 20.0 | 40.0 | 9.157 | O | 136 |
| 10935 | 6.0 | 34.0 | 20.0 | 40.0 | 8.739 | O | 136 |
| 10936 | 5.0 | 35.0 | 20.0 | 40.0 | 8.321 | O | 136 |
| 10937 | 4.0 | 36.0 | 20.0 | 40.0 | 7.903 | O | 136 |
| 10938 | 3.0 | 37.0 | 20.0 | 40.0 | 7.485 | O | 136 |
| 10939 | 2.0 | 38.0 | 20.0 | 40.0 | 7.067 | O | 136 |
| 10940 | 1.0 | 39.0 | 20.0 | 40.0 | 6.649 | O | 136 |
| 10941 | 0.0 | 40.0 | 20.0 | 40.0 | 6.232 | O | 136 |
| 10942 | 35.0 | 3.0 | 22.0 | 40.0 | 19.169 | X | 150 |
| 10943 | 34.6 | 3.4 | 22.0 | 40.0 | 19.027 | X | 150 |
| 10944 | 34.5 | 3.5 | 22.0 | 40.0 | 18.991 | O | 150 |
| 10945 | 34.0 | 4.0 | 22.0 | 40.0 | 18.813 | O | 150 |
| 10946 | 30.0 | 8.0 | 22.0 | 40.0 | 17.385 | O | 150 |
| 10947 | 20.0 | 18.0 | 22.0 | 40.0 | 13.817 | O | 150 |
| 10948 | 10.0 | 28.0 | 22.0 | 40.0 | 10.249 | O | 150 |
| 10949 | 9.0 | 29.0 | 22.0 | 40.0 | 9.892 | O | 150 |
| 10950 | 8.0 | 30.0 | 22.0 | 40.0 | 9.535 | O | 150 |
| 10951 | 7.0 | 31.0 | 22.0 | 40.0 | 9.149 | O | 150 |
| 10952 | 6.0 | 32.0 | 22.0 | 40.0 | 8.731 | O | 150 |
| 10953 | 5.0 | 33.0 | 22.0 | 40.0 | 8.313 | O | 150 |
| 10954 | 4.0 | 34.0 | 22.0 | 40.0 | 7.896 | O | 150 |
| 10955 | 3.0 | 35.0 | 22.0 | 40.0 | 7.478 | O | 150 |
| 10956 | 2.0 | 36.0 | 22.0 | 40.0 | 7.060 | O | 150 |
| 10957 | 1.0 | 37.0 | 22.0 | 40.0 | 6.642 | O | 150 |
| 10958 | 0.0 | 38.0 | 22.0 | 40.0 | 6.224 | O | 150 |
| 10959 | 37.0 | 11.0 | 2.0 | 50.0 | 19.172 | X | 15 |
| 10960 | 36.6 | 11.4 | 2.0 | 50.0 | 19.029 | X | 15 |
| 10961 | 36.5 | 11.5 | 2.0 | 50.0 | 18.993 | O | 15 |
| 10962 | 35.0 | 13.0 | 2.0 | 50.0 | 18.458 | O | 15 |
| 10963 | 30.0 | 18.0 | 2.0 | 50.0 | 16.674 | O | 15 |
| 10964 | 20.0 | 28.0 | 2.0 | 50.0 | 13.106 | O | 15 |
| 10965 | 10.0 | 38.0 | 2.0 | 50.0 | 9.538 | O | 15 |
| 10966 | 9.0 | 39.0 | 2.0 | 50.0 | 9.156 | O | 15 |
| 10967 | 8.0 | 40.0 | 2.0 | 50.0 | 8.738 | O | 15 |
| 10968 | 7.0 | 41.0 | 2.0 | 50.0 | 8.320 | O | 15 |
| 10969 | 6.0 | 42.0 | 2.0 | 50.0 | 7.902 | O | 15 |
| 10970 | 5.0 | 43.0 | 2.0 | 50.0 | 7.484 | O | 15 |
| 10971 | 4.0 | 44.0 | 2.0 | 50.0 | 7.067 | O | 15 |
| 10972 | 3.0 | 45.0 | 2.0 | 50.0 | 6.649 | O | 15 |
| 10973 | 2.0 | 46.0 | 2.0 | 50.0 | 6.231 | O | 15 |

[Table 202]

| 10974 | 1.0 | 47.0 | 2.0 | 50.0 | 5.813 | O | 15 |
|---|---|---|---|---|---|---|---|
| 10975 | 0.0 | 48.0 | 2.0 | 50.0 | 5.395 | O | 15 |
| 10976 | 37.0 | 8.0 | 5.0 | 50.0 | 19.139 | X | 35 |
| 10977 | 36.6 | 8.4 | 5.0 | 50.0 | 18.996 | O | 35 |
| 10978 | 36.5 | 8.5 | 5.0 | 50.0 | 18.960 | O | 35 |
| 10979 | 36.0 | 9.0 | 5.0 | 50.0 | 18.782 | O | 35 |
| 10980 | 30.0 | 15.0 | 5.0 | 50.0 | 16.641 | O | 35 |
| 10981 | 20.0 | 25.0 | 5.0 | 50.0 | 13.073 | O | 35 |
| 10982 | 10.0 | 35.0 | 5.0 | 50.0 | 9.505 | O | 35 |
| 10983 | 9.0 | 36.0 | 5.0 | 50.0 | 9.145 | O | 35 |
| 10984 | 8.0 | 37.0 | 5.0 | 50.0 | 8.727 | O | 35 |
| 10985 | 7.0 | 38.0 | 5.0 | 50.0 | 8.309 | O | 35 |
| 10986 | 6.0 | 39.0 | 5.0 | 50.0 | 7.891 | O | 35 |
| 10987 | 5.0 | 40.0 | 5.0 | 50.0 | 7.473 | O | 35 |
| 10988 | 4.0 | 41.0 | 5.0 | 50.0 | 7.055 | O | 35 |
| 10989 | 3.0 | 42.0 | 5.0 | 50.0 | 6.637 | O | 35 |
| 10990 | 2.0 | 43.0 | 5.0 | 50.0 | 6.219 | O | 35 |
| 10991 | 1.0 | 44.0 | 5.0 | 50.0 | 5.801 | O | 35 |
| 10992 | 0.0 | 45.0 | 5.0 | 50.0 | 5.383 | O | 35 |
| 10993 | 37.0 | 3.0 | 10.0 | 50.0 | 19.083 | X | 69 |
| 10994 | 36.8 | 3.2 | 10.0 | 50.0 | 19.012 | X | 69 |
| 10995 | 36.7 | 3.3 | 10.0 | 50.0 | 18.976 | O | 69 |
| 10996 | 36.0 | 4.0 | 10.0 | 50.0 | 18.727 | O | 69 |
| 10997 | 30.0 | 10.0 | 10.0 | 50.0 | 16.586 | O | 69 |
| 10998 | 20.0 | 20.0 | 10.0 | 50.0 | 13.018 | O | 69 |
| 10999 | 10.0 | 30.0 | 10.0 | 50.0 | 9.449 | O | 69 |
| 11000 | 9.0 | 31.0 | 10.0 | 50.0 | 9.093 | O | 69 |
| 11001 | 8.0 | 32.0 | 10.0 | 50.0 | 8.708 | O | 69 |
| 11002 | 7.0 | 33.0 | 10.0 | 50.0 | 8.290 | O | 69 |
| 11003 | 6.0 | 34.0 | 10.0 | 50.0 | 7.872 | O | 69 |
| 11004 | 5.0 | 35.0 | 10.0 | 50.0 | 7.454 | O | 69 |
| 11005 | 4.0 | 36.0 | 10.0 | 50.0 | 7.036 | O | 69 |
| 11006 | 3.0 | 37.0 | 10.0 | 50.0 | 6.618 | O | 69 |
| 11007 | 2.0 | 38.0 | 10.0 | 50.0 | 6.200 | O | 69 |
| 11008 | 1.0 | 39.0 | 10.0 | 50.0 | 5.782 | O | 69 |
| 11009 | 0.0 | 40.0 | 10.0 | 50.0 | 5.364 | O | 69 |

Tables 203 to 212 show the composition, combustion heat amount, and GWP of the working medium of a four-component system of propane, HFO-1123, $CO_2$, and $CF_3I$.

[Table 203]

| Case | propane | HFO-1123 | $CO_2$ | $CF_3I$ | Heat of Combustion | Evaluation | GWP |
|---|---|---|---|---|---|---|---|
| 11010 | 26.0 | 67.0 | 2.0 | 5.0 | 19.251 | X | 1 |
| 11011 | 25.3 | 67.7 | 2.0 | 5.0 | 19.001 | X | 1 |
| 11012 | 25.2 | 67.8 | 2.0 | 5.0 | 18.965 | O | 1 |
| 11013 | 25.0 | 68.0 | 2.0 | 5.0 | 18.894 | O | 1 |
| 11014 | 20.0 | 73.0 | 2.0 | 5.0 | 17.110 | O | 1 |
| 11015 | 10.0 | 83.0 | 2.0 | 5.0 | 13.457 | O | 1 |
| 11016 | 9.0 | 84.0 | 2.0 | 5.0 | 13.039 | O | 1 |
| 11017 | 8.0 | 85.0 | 2.0 | 5.0 | 12.621 | O | 1 |
| 11018 | 7.0 | 86.0 | 2.0 | 5.0 | 12.203 | O | 1 |
| 11019 | 6.0 | 87.0 | 2.0 | 5.0 | 11.785 | O | 1 |
| 11020 | 5.0 | 88.0 | 2.0 | 5.0 | 11.367 | O | 1 |
| 11021 | 4.0 | 89.0 | 2.0 | 5.0 | 10.949 | O | 1 |
| 11022 | 3.0 | 90.0 | 2.0 | 5.0 | 10.531 | O | 1 |
| 11023 | 2.0 | 91.0 | 2.0 | 5.0 | 10.113 | O | 1 |
| 11024 | 1.0 | 92.0 | 2.0 | 5.0 | 9.696 | O | 1 |
| 11025 | 0.0 | 93.0 | 2.0 | 5.0 | 9.278 | O | 1 |
| 11026 | 26.0 | 65.0 | 4.0 | 5.0 | 19.038 | X | 1 |
| 11027 | 25.9 | 65.1 | 4.0 | 5.0 | 19.002 | X | 1 |
| 11028 | 25.8 | 65.2 | 4.0 | 5.0 | 18.966 | O | 1 |
| 11029 | 25.0 | 66.0 | 4.0 | 5.0 | 18.681 | O | 1 |
| 11030 | 20.0 | 71.0 | 4.0 | 5.0 | 16.897 | O | 1 |
| 11031 | 10.0 | 81.0 | 4.0 | 5.0 | 13.258 | O | 1 |
| 11032 | 9.0 | 82.0 | 4.0 | 5.0 | 12.840 | O | 1 |
| 11033 | 8.0 | 83.0 | 4.0 | 5.0 | 12.422 | O | 1 |
| 11034 | 7.0 | 84.0 | 4.0 | 5.0 | 12.004 | O | 1 |
| 11035 | 6.0 | 85.0 | 4.0 | 5.0 | 11.587 | O | 1 |
| 11036 | 5.0 | 86.0 | 4.0 | 5.0 | 11.169 | O | 1 |
| 11037 | 4.0 | 87.0 | 4.0 | 5.0 | 10.751 | O | 1 |
| 11038 | 3.0 | 88.0 | 4.0 | 5.0 | 10.333 | O | 1 |
| 11039 | 2.0 | 89.0 | 4.0 | 5.0 | 9.915 | O | 1 |
| 11040 | 1.0 | 90.0 | 4.0 | 5.0 | 9.497 | O | 1 |
| 11041 | 0.0 | 91.0 | 4.0 | 5.0 | 9.079 | O | 1 |
| 11042 | 27.0 | 62.0 | 6.0 | 5.0 | 19.181 | X | 1 |
| 11043 | 26.5 | 62.5 | 6.0 | 5.0 | 19.003 | X | 1 |
| 11044 | 26.4 | 62.6 | 6.0 | 5.0 | 18.967 | O | 1 |
| 11045 | 26.0 | 63.0 | 6.0 | 5.0 | 18.825 | O | 1 |
| 11046 | 20.0 | 69.0 | 6.0 | 5.0 | 16.684 | O | 1 |
| 11047 | 10.0 | 79.0 | 6.0 | 5.0 | 13.060 | O | 1 |
| 11048 | 9.0 | 80.0 | 6.0 | 5.0 | 12.642 | O | 1 |
| 11049 | 8.0 | 81.0 | 6.0 | 5.0 | 12.224 | O | 1 |
| 11050 | 7.0 | 82.0 | 6.0 | 5.0 | 11.806 | O | 1 |
| 11051 | 6.0 | 83.0 | 6.0 | 5.0 | 11.388 | O | 1 |
| 11052 | 5.0 | 84.0 | 6.0 | 5.0 | 10.970 | O | 1 |
| 11053 | 4.0 | 85.0 | 6.0 | 5.0 | 10.552 | O | 1 |
| 11054 | 3.0 | 86.0 | 6.0 | 5.0 | 10.134 | O | 1 |
| 11055 | 2.0 | 87.0 | 6.0 | 5.0 | 9.716 | O | 1 |
| 11056 | 1.0 | 88.0 | 6.0 | 5.0 | 9.298 | O | 1 |
| 11057 | 0.0 | 89.0 | 6.0 | 5.0 | 8.880 | O | 1 |
| 11058 | 28.0 | 59.0 | 8.0 | 5.0 | 19.325 | X | 1 |
| 11059 | 27.1 | 59.9 | 8.0 | 5.0 | 19.004 | X | 1 |

[Table 204]

| 11060 | 27.0 | 60.0 | 8.0 | 5.0 | 18.968 | O | 1 |
|---|---|---|---|---|---|---|---|
| 11061 | 20.0 | 67.0 | 8.0 | 5.0 | 16.471 | O | 1 |
| 11062 | 10.0 | 77.0 | 8.0 | 5.0 | 12.861 | O | 1 |
| 11063 | 9.0 | 78.0 | 8.0 | 5.0 | 12.443 | O | 1 |
| 11064 | 8.0 | 79.0 | 8.0 | 5.0 | 12.025 | O | 1 |
| 11065 | 7.0 | 80.0 | 8.0 | 5.0 | 11.607 | O | 1 |
| 11066 | 6.0 | 81.0 | 8.0 | 5.0 | 11.189 | O | 1 |
| 11067 | 5.0 | 82.0 | 8.0 | 5.0 | 10.771 | O | 1 |
| 11068 | 4.0 | 83.0 | 8.0 | 5.0 | 10.354 | O | 1 |
| 11069 | 3.0 | 84.0 | 8.0 | 5.0 | 9.936 | O | 1 |
| 11070 | 2.0 | 85.0 | 8.0 | 5.0 | 9.518 | O | 1 |
| 11071 | 1.0 | 86.0 | 8.0 | 5.0 | 9.100 | O | 1 |
| 11072 | 0.0 | 87.0 | 8.0 | 5.0 | 8.682 | O | 1 |
| 11073 | 28.0 | 57.0 | 10.0 | 5.0 | 19.112 | X | 1 |
| 11074 | 27.7 | 57.3 | 10.0 | 5.0 | 19.005 | X | 1 |
| 11075 | 27.6 | 57.4 | 10.0 | 5.0 | 18.969 | O | 1 |
| 11076 | 27.0 | 58.0 | 10.0 | 5.0 | 18.755 | O | 1 |
| 11077 | 20.0 | 65.0 | 10.0 | 5.0 | 16.258 | O | 1 |
| 11078 | 10.0 | 75.0 | 10.0 | 5.0 | 12.662 | O | 1 |
| 11079 | 9.0 | 76.0 | 10.0 | 5.0 | 12.245 | O | 1 |
| 11080 | 8.0 | 77.0 | 10.0 | 5.0 | 11.827 | O | 1 |
| 11081 | 7.0 | 78.0 | 10.0 | 5.0 | 11.409 | O | 1 |
| 11082 | 6.0 | 79.0 | 10.0 | 5.0 | 10.991 | O | 1 |
| 11083 | 5.0 | 80.0 | 10.0 | 5.0 | 10.573 | O | 1 |
| 11084 | 4.0 | 81.0 | 10.0 | 5.0 | 10.155 | O | 1 |
| 11085 | 3.0 | 82.0 | 10.0 | 5.0 | 9.737 | O | 1 |
| 11086 | 2.0 | 83.0 | 10.0 | 5.0 | 9.319 | O | 1 |
| 11087 | 1.0 | 84.0 | 10.0 | 5.0 | 8.901 | O | 1 |
| 11088 | 0.0 | 85.0 | 10.0 | 5.0 | 8.483 | O | 1 |
| 11089 | 27.0 | 61.0 | 2.0 | 10.0 | 19.141 | X | 1 |
| 11090 | 26.7 | 61.3 | 2.0 | 10.0 | 19.034 | X | 1 |
| 11091 | 26.6 | 61.4 | 2.0 | 10.0 | 18.999 | O | 1 |
| 11092 | 26.0 | 62.0 | 2.0 | 10.0 | 18.785 | O | 1 |
| 11093 | 20.0 | 68.0 | 2.0 | 10.0 | 16.644 | O | 1 |
| 11094 | 10.0 | 78.0 | 2.0 | 10.0 | 13.004 | O | 1 |
| 11095 | 9.0 | 79.0 | 2.0 | 10.0 | 12.586 | O | 1 |
| 11096 | 8.0 | 80.0 | 2.0 | 10.0 | 12.168 | O | 1 |
| 11097 | 7.0 | 81.0 | 2.0 | 10.0 | 11.750 | O | 1 |
| 11098 | 6.0 | 82.0 | 2.0 | 10.0 | 11.332 | O | 1 |
| 11099 | 5.0 | 83.0 | 2.0 | 10.0 | 10.915 | O | 1 |
| 11100 | 4.0 | 84.0 | 2.0 | 10.0 | 10.497 | O | 1 |
| 11101 | 3.0 | 85.0 | 2.0 | 10.0 | 10.079 | O | 1 |
| 11102 | 2.0 | 86.0 | 2.0 | 10.0 | 9.661 | O | 1 |
| 11103 | 1.0 | 87.0 | 2.0 | 10.0 | 9.243 | O | 1 |
| 11104 | 0.0 | 88.0 | 2.0 | 10.0 | 8.825 | O | 1 |
| 11105 | 28.0 | 58.0 | 4.0 | 10.0 | 19.285 | X | 1 |
| 11106 | 27.2 | 58.8 | 4.0 | 10.0 | 19.000 | X | 1 |
| 11107 | 27.1 | 58.9 | 4.0 | 10.0 | 18.964 | O | 1 |
| 11108 | 27.0 | 59.0 | 4.0 | 10.0 | 18.928 | O | 1 |
| 11109 | 20.0 | 66.0 | 4.0 | 10.0 | 16.431 | O | 1 |

[Table 205]

| | | | | | | | |
|---|---|---|---|---|---|---|---|
| 11110 | 10.0 | 76.0 | 4.0 | 10.0 | 12.806 | O | 1 |
| 11111 | 9.0 | 77.0 | 4.0 | 10.0 | 12.388 | O | 1 |
| 11112 | 8.0 | 78.0 | 4.0 | 10.0 | 11.970 | O | 1 |
| 11113 | 7.0 | 79.0 | 4.0 | 10.0 | 11.552 | O | 1 |
| 11114 | 6.0 | 80.0 | 4.0 | 10.0 | 11.134 | O | 1 |
| 11115 | 5.0 | 81.0 | 4.0 | 10.0 | 10.716 | O | 1 |
| 11116 | 4.0 | 82.0 | 4.0 | 10.0 | 10.298 | O | 1 |
| 11117 | 3.0 | 83.0 | 4.0 | 10.0 | 9.880 | O | 1 |
| 11118 | 2.0 | 84.0 | 4.0 | 10.0 | 9.462 | O | 1 |
| 11119 | 1.0 | 85.0 | 4.0 | 10.0 | 9.044 | O | 1 |
| 11120 | 0.0 | 86.0 | 4.0 | 10.0 | 8.626 | O | 1 |
| 11121 | 28.0 | 56.0 | 6.0 | 10.0 | 19.072 | X | 1 |
| 11122 | 27.8 | 56.2 | 6.0 | 10.0 | 19.001 | X | 1 |
| 11123 | 27.7 | 56.3 | 6.0 | 10.0 | 18.965 | O | 1 |
| 11124 | 27.0 | 57.0 | 6.0 | 10.0 | 18.715 | O | 1 |
| 11125 | 20.0 | 64.0 | 6.0 | 10.0 | 16.218 | O | 1 |
| 11126 | 10.0 | 74.0 | 6.0 | 10.0 | 12.607 | O | 1 |
| 11127 | 9.0 | 75.0 | 6.0 | 10.0 | 12.189 | O | 1 |
| 11128 | 8.0 | 76.0 | 6.0 | 10.0 | 11.771 | O | 1 |
| 11129 | 7.0 | 77.0 | 6.0 | 10.0 | 11.353 | O | 1 |
| 11130 | 6.0 | 78.0 | 6.0 | 10.0 | 10.935 | O | 1 |
| 11131 | 5.0 | 79.0 | 6.0 | 10.0 | 10.517 | O | 1 |
| 11132 | 4.0 | 80.0 | 6.0 | 10.0 | 10.099 | O | 1 |
| 11133 | 3.0 | 81.0 | 6.0 | 10.0 | 9.682 | O | 1 |
| 11134 | 2.0 | 82.0 | 6.0 | 10.0 | 9.264 | O | 1 |
| 11135 | 1.0 | 83.0 | 6.0 | 10.0 | 8.846 | O | 1 |
| 11136 | 0.0 | 84.0 | 6.0 | 10.0 | 8.428 | O | 1 |
| 11137 | 29.0 | 53.0 | 8.0 | 10.0 | 19.216 | X | 1 |
| 11138 | 28.4 | 53.6 | 8.0 | 10.0 | 19.002 | X | 1 |
| 11139 | 28.3 | 53.7 | 8.0 | 10.0 | 18.966 | O | 1 |
| 11140 | 28.0 | 54.0 | 8.0 | 10.0 | 18.859 | O | 1 |
| 11141 | 20.0 | 62.0 | 8.0 | 10.0 | 16.005 | O | 1 |
| 11142 | 10.0 | 72.0 | 8.0 | 10.0 | 12.408 | O | 1 |
| 11143 | 9.0 | 73.0 | 8.0 | 10.0 | 11.990 | O | 1 |
| 11144 | 8.0 | 74.0 | 8.0 | 10.0 | 11.573 | O | 1 |
| 11145 | 7.0 | 75.0 | 8.0 | 10.0 | 11.155 | O | 1 |
| 11146 | 6.0 | 76.0 | 8.0 | 10.0 | 10.737 | O | 1 |
| 11147 | 5.0 | 77.0 | 8.0 | 10.0 | 10.319 | O | 1 |
| 11148 | 4.0 | 78.0 | 8.0 | 10.0 | 9.901 | O | 1 |
| 11149 | 3.0 | 79.0 | 8.0 | 10.0 | 9.483 | O | 1 |
| 11150 | 2.0 | 80.0 | 8.0 | 10.0 | 9.065 | O | 1 |
| 11151 | 1.0 | 81.0 | 8.0 | 10.0 | 8.647 | O | 1 |
| 11152 | 0.0 | 82.0 | 8.0 | 10.0 | 8.229 | O | 1 |
| 11153 | 29.0 | 51.0 | 10.0 | 10.0 | 19.003 | X | 1 |
| 11154 | 28.9 | 51.1 | 10.0 | 10.0 | 18.967 | O | 1 |
| 11155 | 28.0 | 52.0 | 10.0 | 10.0 | 18.646 | O | 1 |
| 11156 | 20.0 | 60.0 | 10.0 | 10.0 | 15.792 | O | 1 |
| 11157 | 10.0 | 70.0 | 10.0 | 10.0 | 12.210 | O | 1 |
| 11158 | 9.0 | 71.0 | 10.0 | 10.0 | 11.792 | O | 1 |
| 11159 | 8.0 | 72.0 | 10.0 | 10.0 | 11.374 | O | 1 |

[Table 206]

| | | | | | | | |
|---|---|---|---|---|---|---|---|
| 11160 | 7.0 | 73.0 | 10.0 | 10.0 | 10.956 | O | 1 |
| 11161 | 6.0 | 74.0 | 10.0 | 10.0 | 10.538 | O | 1 |
| 11162 | 5.0 | 75.0 | 10.0 | 10.0 | 10.120 | O | 1 |
| 11163 | 4.0 | 76.0 | 10.0 | 10.0 | 9.702 | O | 1 |
| 11164 | 3.0 | 77.0 | 10.0 | 10.0 | 9.284 | O | 1 |
| 11165 | 2.0 | 78.0 | 10.0 | 10.0 | 8.866 | O | 1 |
| 11166 | 1.0 | 79.0 | 10.0 | 10.0 | 8.449 | O | 1 |
| 11167 | 0.0 | 80.0 | 10.0 | 10.0 | 8.031 | O | 1 |
| 11168 | 30.0 | 48.0 | 2.0 | 20.0 | 19.280 | X | 1 |
| 11169 | 29.3 | 48.7 | 2.0 | 20.0 | 19.030 | X | 1 |
| 11170 | 29.2 | 48.8 | 2.0 | 20.0 | 18.994 | O | 1 |
| 11171 | 29.0 | 49.0 | 2.0 | 20.0 | 18.923 | O | 1 |
| 11172 | 20.0 | 58.0 | 2.0 | 20.0 | 15.712 | O | 1 |
| 11173 | 10.0 | 68.0 | 2.0 | 20.0 | 12.099 | O | 1 |
| 11174 | 9.0 | 69.0 | 2.0 | 20.0 | 11.681 | O | 1 |
| 11175 | 8.0 | 70.0 | 2.0 | 20.0 | 11.263 | O | 1 |
| 11176 | 7.0 | 71.0 | 2.0 | 20.0 | 10.845 | O | 1 |
| 11177 | 6.0 | 72.0 | 2.0 | 20.0 | 10.427 | O | 1 |
| 11178 | 5.0 | 73.0 | 2.0 | 20.0 | 10.009 | O | 1 |
| 11179 | 4.0 | 74.0 | 2.0 | 20.0 | 9.591 | O | 1 |
| 11180 | 3.0 | 75.0 | 2.0 | 20.0 | 9.173 | O | 1 |
| 11181 | 2.0 | 76.0 | 2.0 | 20.0 | 8.756 | O | 1 |
| 11182 | 1.0 | 77.0 | 2.0 | 20.0 | 8.338 | O | 1 |
| 11183 | 0.0 | 78.0 | 2.0 | 20.0 | 7.920 | O | 1 |
| 11184 | 30.0 | 46.0 | 4.0 | 20.0 | 19.067 | X | 1 |
| 11185 | 29.9 | 46.1 | 4.0 | 20.0 | 19.031 | X | 1 |
| 11186 | 29.8 | 46.2 | 4.0 | 20.0 | 18.995 | O | 1 |
| 11187 | 29.0 | 47.0 | 4.0 | 20.0 | 18.710 | O | 1 |
| 11188 | 20.0 | 56.0 | 4.0 | 20.0 | 15.499 | O | 1 |
| 11189 | 10.0 | 66.0 | 4.0 | 20.0 | 11.900 | O | 1 |
| 11190 | 9.0 | 67.0 | 4.0 | 20.0 | 11.482 | O | 1 |
| 11191 | 8.0 | 68.0 | 4.0 | 20.0 | 11.064 | O | 1 |
| 11192 | 7.0 | 69.0 | 4.0 | 20.0 | 10.647 | O | 1 |
| 11193 | 6.0 | 70.0 | 4.0 | 20.0 | 10.229 | O | 1 |
| 11194 | 5.0 | 71.0 | 4.0 | 20.0 | 9.811 | O | 1 |
| 11195 | 4.0 | 72.0 | 4.0 | 20.0 | 9.393 | O | 1 |
| 11196 | 3.0 | 73.0 | 4.0 | 20.0 | 8.975 | O | 1 |
| 11197 | 2.0 | 74.0 | 4.0 | 20.0 | 8.557 | O | 1 |
| 11198 | 1.0 | 75.0 | 4.0 | 20.0 | 8.139 | O | 1 |
| 11199 | 0.0 | 76.0 | 4.0 | 20.0 | 7.721 | O | 1 |
| 11200 | 31.0 | 43.0 | 6.0 | 20.0 | 19.210 | X | 1 |
| 11201 | 30.5 | 43.5 | 6.0 | 20.0 | 19.032 | X | 1 |
| 11202 | 30.4 | 43.6 | 6.0 | 20.0 | 18.996 | O | 1 |
| 11203 | 30.0 | 44.0 | 6.0 | 20.0 | 18.854 | O | 1 |
| 11204 | 20.0 | 54.0 | 6.0 | 20.0 | 15.285 | O | 1 |
| 11205 | 10.0 | 64.0 | 6.0 | 20.0 | 11.702 | O | 1 |
| 11206 | 9.0 | 65.0 | 6.0 | 20.0 | 11.284 | O | 1 |
| 11207 | 8.0 | 66.0 | 6.0 | 20.0 | 10.866 | O | 1 |
| 11208 | 7.0 | 67.0 | 6.0 | 20.0 | 10.448 | O | 1 |
| 11209 | 6.0 | 68.0 | 6.0 | 20.0 | 10.030 | O | 1 |

[Table 207]

| 11210 | 5.0 | 69.0 | 6.0 | 20.0 | 9.612 | O | 1 |
| 11211 | 4.0 | 70.0 | 6.0 | 20.0 | 9.194 | O | 1 |
| 11212 | 3.0 | 71.0 | 6.0 | 20.0 | 8.776 | O | 1 |
| 11213 | 2.0 | 72.0 | 6.0 | 20.0 | 8.358 | O | 1 |
| 11214 | 1.0 | 73.0 | 6.0 | 20.0 | 7.940 | O | 1 |
| 11215 | 0.0 | 74.0 | 6.0 | 20.0 | 7.523 | O | 1 |
| 11216 | 32.0 | 40.0 | 8.0 | 20.0 | 19.354 | X | 1 |
| 11217 | 31.1 | 40.9 | 8.0 | 20.0 | 19.033 | X | 1 |
| 11218 | 31.0 | 41.0 | 8.0 | 20.0 | 18.997 | O | 1 |
| 11219 | 30.0 | 42.0 | 8.0 | 20.0 | 18.641 | O | 1 |
| 11220 | 20.0 | 52.0 | 8.0 | 20.0 | 15.072 | O | 1 |
| 11221 | 10.0 | 62.0 | 8.0 | 20.0 | 11.503 | O | 1 |
| 11222 | 9.0 | 63.0 | 8.0 | 20.0 | 11.085 | O | 1 |
| 11223 | 8.0 | 64.0 | 8.0 | 20.0 | 10.667 | O | 1 |
| 11224 | 7.0 | 65.0 | 8.0 | 20.0 | 10.249 | O | 1 |
| 11225 | 6.0 | 66.0 | 8.0 | 20.0 | 9.831 | O | 1 |
| 11226 | 5.0 | 67.0 | 8.0 | 20.0 | 9.414 | O | 1 |
| 11227 | 4.0 | 68.0 | 8.0 | 20.0 | 8.996 | O | 1 |
| 11228 | 3.0 | 69.0 | 8.0 | 20.0 | 8.578 | O | 1 |
| 11229 | 2.0 | 70.0 | 8.0 | 20.0 | 8.160 | O | 1 |
| 11230 | 1.0 | 71.0 | 8.0 | 20.0 | 7.742 | O | 1 |
| 11231 | 0.0 | 72.0 | 8.0 | 20.0 | 7.324 | O | 1 |
| 11232 | 32.0 | 38.0 | 10.0 | 20.0 | 19.141 | X | 1 |
| 11233 | 31.7 | 38.3 | 10.0 | 20.0 | 19.034 | X | 1 |
| 11234 | 31.6 | 38.4 | 10.0 | 20.0 | 18.998 | O | 1 |
| 11235 | 31.0 | 39.0 | 10.0 | 20.0 | 18.784 | O | 1 |
| 11236 | 30.0 | 40.0 | 10.0 | 20.0 | 18.427 | O | 1 |
| 11237 | 20.0 | 50.0 | 10.0 | 20.0 | 14.859 | O | 1 |
| 11238 | 10.0 | 60.0 | 10.0 | 20.0 | 11.291 | O | 1 |
| 11239 | 9.0 | 61.0 | 10.0 | 20.0 | 10.887 | O | 1 |
| 11240 | 8.0 | 62.0 | 10.0 | 20.0 | 10.469 | O | 1 |
| 11241 | 7.0 | 63.0 | 10.0 | 20.0 | 10.051 | O | 1 |
| 11242 | 6.0 | 64.0 | 10.0 | 20.0 | 9.633 | O | 1 |
| 11243 | 5.0 | 65.0 | 10.0 | 20.0 | 9.215 | O | 1 |
| 11244 | 4.0 | 66.0 | 10.0 | 20.0 | 8.797 | O | 1 |
| 11245 | 3.0 | 67.0 | 10.0 | 20.0 | 8.379 | O | 1 |
| 11246 | 2.0 | 68.0 | 10.0 | 20.0 | 7.961 | O | 1 |
| 11247 | 1.0 | 69.0 | 10.0 | 20.0 | 7.543 | O | 1 |
| 11248 | 0.0 | 70.0 | 10.0 | 20.0 | 7.125 | O | 1 |
| 11249 | 32.0 | 36.0 | 2.0 | 30.0 | 19.061 | X | 1 |
| 11250 | 31.9 | 36.1 | 2.0 | 30.0 | 19.025 | X | 1 |
| 11251 | 31.8 | 36.2 | 2.0 | 30.0 | 18.990 | O | 1 |
| 11252 | 31.0 | 37.0 | 2.0 | 30.0 | 18.704 | O | 1 |
| 11253 | 30.0 | 38.0 | 2.0 | 30.0 | 18.348 | O | 1 |
| 11254 | 20.0 | 48.0 | 2.0 | 30.0 | 14.779 | O | 1 |
| 11255 | 10.0 | 58.0 | 2.0 | 30.0 | 11.194 | O | 1 |
| 11256 | 9.0 | 59.0 | 2.0 | 30.0 | 10.776 | O | 1 |
| 11257 | 8.0 | 60.0 | 2.0 | 30.0 | 10.358 | O | 1 |
| 11258 | 7.0 | 61.0 | 2.0 | 30.0 | 9.940 | O | 1 |
| 11259 | 6.0 | 62.0 | 2.0 | 30.0 | 9.522 | O | 1 |

[Table 208]

| 11260 | 5.0 | 63.0 | 2.0 | 30.0 | 9.104 | O | 1 |
|---|---|---|---|---|---|---|---|
| 11261 | 4.0 | 64.0 | 2.0 | 30.0 | 8.686 | O | 1 |
| 11262 | 3.0 | 65.0 | 2.0 | 30.0 | 8.268 | O | 1 |
| 11263 | 2.0 | 66.0 | 2.0 | 30.0 | 7.850 | O | 1 |
| 11264 | 1.0 | 67.0 | 2.0 | 30.0 | 7.432 | O | 1 |
| 11265 | 0.0 | 68.0 | 2.0 | 30.0 | 7.014 | O | 1 |
| 11266 | 33.0 | 33.0 | 4.0 | 30.0 | 19.205 | X | 1 |
| 11267 | 32.5 | 33.5 | 4.0 | 30.0 | 19.027 | X | 1 |
| 11268 | 32.4 | 33.6 | 4.0 | 30.0 | 18.991 | O | 1 |
| 11269 | 32.0 | 34.0 | 4.0 | 30.0 | 18.848 | O | 1 |
| 11270 | 30.0 | 36.0 | 4.0 | 30.0 | 18.134 | O | 1 |
| 11271 | 20.0 | 46.0 | 4.0 | 30.0 | 14.566 | O | 1 |
| 11272 | 10.0 | 56.0 | 4.0 | 30.0 | 10.995 | O | 1 |
| 11273 | 9.0 | 57.0 | 4.0 | 30.0 | 10.577 | O | 1 |
| 11274 | 8.0 | 58.0 | 4.0 | 30.0 | 10.159 | O | 1 |
| 11275 | 7.0 | 59.0 | 4.0 | 30.0 | 9.741 | O | 1 |
| 11276 | 6.0 | 60.0 | 4.0 | 30.0 | 9.323 | O | 1 |
| 11277 | 5.0 | 61.0 | 4.0 | 30.0 | 8.905 | O | 1 |
| 11278 | 4.0 | 62.0 | 4.0 | 30.0 | 8.488 | O | 1 |
| 11279 | 3.0 | 63.0 | 4.0 | 30.0 | 8.070 | O | 1 |
| 11280 | 2.0 | 64.0 | 4.0 | 30.0 | 7.652 | O | 1 |
| 11281 | 1.0 | 65.0 | 4.0 | 30.0 | 7.234 | O | 1 |
| 11282 | 0.0 | 66.0 | 4.0 | 30.0 | 6.816 | O | 1 |
| 11283 | 34.0 | 30.0 | 6.0 | 30.0 | 19.349 | X | 1 |
| 11284 | 33.1 | 30.9 | 6.0 | 30.0 | 19.028 | X | 1 |
| 11285 | 33.0 | 31.0 | 6.0 | 30.0 | 18.992 | O | 1 |
| 11286 | 30.0 | 34.0 | 6.0 | 30.0 | 17.921 | O | 1 |
| 11287 | 20.0 | 44.0 | 6.0 | 30.0 | 14.353 | O | 1 |
| 11288 | 10.0 | 54.0 | 6.0 | 30.0 | 10.785 | O | 1 |
| 11289 | 9.0 | 55.0 | 6.0 | 30.0 | 10.379 | O | 1 |
| 11290 | 8.0 | 56.0 | 6.0 | 30.0 | 9.961 | O | 1 |
| 11291 | 7.0 | 57.0 | 6.0 | 30.0 | 9.543 | O | 1 |
| 11292 | 6.0 | 58.0 | 6.0 | 30.0 | 9.125 | O | 1 |
| 11293 | 5.0 | 59.0 | 6.0 | 30.0 | 8.707 | O | 1 |
| 11294 | 4.0 | 60.0 | 6.0 | 30.0 | 8.289 | O | 1 |
| 11295 | 3.0 | 61.0 | 6.0 | 30.0 | 7.871 | O | 1 |
| 11296 | 2.0 | 62.0 | 6.0 | 30.0 | 7.453 | O | 1 |
| 11297 | 1.0 | 63.0 | 6.0 | 30.0 | 7.035 | O | 1 |
| 11298 | 0.0 | 64.0 | 6.0 | 30.0 | 6.617 | O | 1 |
| 11299 | 34.0 | 28.0 | 8.0 | 30.0 | 19.136 | X | 1 |
| 11300 | 33.7 | 28.3 | 8.0 | 30.0 | 19.029 | X | 1 |
| 11301 | 33.6 | 28.4 | 8.0 | 30.0 | 18.993 | O | 1 |
| 11302 | 33.0 | 29.0 | 8.0 | 30.0 | 18.779 | O | 1 |
| 11303 | 30.0 | 32.0 | 8.0 | 30.0 | 17.708 | O | 1 |
| 11304 | 20.0 | 42.0 | 8.0 | 30.0 | 14.140 | O | 1 |
| 11305 | 10.0 | 52.0 | 8.0 | 30.0 | 10.572 | O | 1 |
| 11306 | 9.0 | 53.0 | 8.0 | 30.0 | 10.180 | O | 1 |
| 11307 | 8.0 | 54.0 | 8.0 | 30.0 | 9.762 | O | 1 |
| 11308 | 7.0 | 55.0 | 8.0 | 30.0 | 9.344 | O | 1 |
| 11309 | 6.0 | 56.0 | 8.0 | 30.0 | 8.926 | O | 1 |

[Table 209]

| 11310 | 5.0 | 57.0 | 8.0 | 30.0 | 8.508 | O | 1 |
|---|---|---|---|---|---|---|---|
| 11311 | 4.0 | 58.0 | 8.0 | 30.0 | 8.090 | O | 1 |
| 11312 | 3.0 | 59.0 | 8.0 | 30.0 | 7.672 | O | 1 |
| 11313 | 2.0 | 60.0 | 8.0 | 30.0 | 7.255 | O | 1 |
| 11314 | 1.0 | 61.0 | 8.0 | 30.0 | 6.837 | O | 1 |
| 11315 | 0.0 | 62.0 | 8.0 | 30.0 | 6.419 | O | 1 |
| 11316 | 35.0 | 25.0 | 10.0 | 30.0 | 19.279 | X | 1 |
| 11317 | 34.3 | 25.7 | 10.0 | 30.0 | 19.030 | X | 1 |
| 11318 | 34.2 | 25.8 | 10.0 | 30.0 | 18.994 | O | 1 |
| 11319 | 34.0 | 26.0 | 10.0 | 30.0 | 18.923 | O | 1 |
| 11320 | 30.0 | 30.0 | 10.0 | 30.0 | 17.495 | O | 1 |
| 11321 | 20.0 | 40.0 | 10.0 | 30.0 | 13.927 | O | 1 |
| 11322 | 10.0 | 50.0 | 10.0 | 30.0 | 10.359 | O | 1 |
| 11323 | 9.0 | 51.0 | 10.0 | 30.0 | 9.981 | O | 1 |
| 11324 | 8.0 | 52.0 | 10.0 | 30.0 | 9.563 | O | 1 |
| 11325 | 7.0 | 53.0 | 10.0 | 30.0 | 9.146 | O | 1 |
| 11326 | 6.0 | 54.0 | 10.0 | 30.0 | 8.728 | O | 1 |
| 11327 | 5.0 | 55.0 | 10.0 | 30.0 | 8.310 | O | 1 |
| 11328 | 4.0 | 56.0 | 10.0 | 30.0 | 7.892 | O | 1 |
| 11329 | 3.0 | 57.0 | 10.0 | 30.0 | 7.474 | O | 1 |
| 11330 | 2.0 | 58.0 | 10.0 | 30.0 | 7.056 | O | 1 |
| 11331 | 1.0 | 59.0 | 10.0 | 30.0 | 6.638 | O | 1 |
| 11332 | 0.0 | 60.0 | 10.0 | 30.0 | 6.220 | O | 1 |
| 11333 | 35.0 | 23.0 | 2.0 | 40.0 | 19.199 | X | 1 |
| 11334 | 34.5 | 23.5 | 2.0 | 40.0 | 19.021 | X | 1 |
| 11335 | 34.4 | 23.6 | 2.0 | 40.0 | 18.985 | O | 1 |
| 11336 | 34.0 | 24.0 | 2.0 | 40.0 | 18.843 | O | 1 |
| 11337 | 30.0 | 28.0 | 2.0 | 40.0 | 17.415 | O | 1 |
| 11338 | 20.0 | 38.0 | 2.0 | 40.0 | 13.847 | O | 1 |
| 11339 | 10.0 | 48.0 | 2.0 | 40.0 | 10.279 | O | 1 |
| 11340 | 9.0 | 49.0 | 2.0 | 40.0 | 9.870 | O | 1 |
| 11341 | 8.0 | 50.0 | 2.0 | 40.0 | 9.453 | O | 1 |
| 11342 | 7.0 | 51.0 | 2.0 | 40.0 | 9.035 | O | 1 |
| 11343 | 6.0 | 52.0 | 2.0 | 40.0 | 8.617 | O | 1 |
| 11344 | 5.0 | 53.0 | 2.0 | 40.0 | 8.199 | O | 1 |
| 11345 | 4.0 | 54.0 | 2.0 | 40.0 | 7.781 | O | 1 |
| 11346 | 3.0 | 55.0 | 2.0 | 40.0 | 7.363 | O | 1 |
| 11347 | 2.0 | 56.0 | 2.0 | 40.0 | 6.945 | O | 1 |
| 11348 | 1.0 | 57.0 | 2.0 | 40.0 | 6.527 | O | 1 |
| 11349 | 0.0 | 58.0 | 2.0 | 40.0 | 6.109 | O | 1 |
| 11350 | 36.0 | 20.0 | 4.0 | 40.0 | 19.343 | X | 1 |
| 11351 | 35.1 | 20.9 | 4.0 | 40.0 | 19.022 | X | 1 |
| 11352 | 35.0 | 21.0 | 4.0 | 40.0 | 18.986 | O | 1 |
| 11353 | 30.0 | 26.0 | 4.0 | 40.0 | 17.202 | O | 1 |
| 11354 | 20.0 | 36.0 | 4.0 | 40.0 | 13.634 | O | 1 |
| 11355 | 10.0 | 46.0 | 4.0 | 40.0 | 10.066 | O | 1 |
| 11356 | 9.0 | 47.0 | 4.0 | 40.0 | 9.672 | O | 1 |
| 11357 | 8.0 | 48.0 | 4.0 | 40.0 | 9.254 | O | 1 |
| 11358 | 7.0 | 49.0 | 4.0 | 40.0 | 8.836 | O | 1 |
| 11359 | 6.0 | 50.0 | 4.0 | 40.0 | 8.418 | O | 1 |

[Table 210]

| 11360 | 5.0 | 51.0 | 4.0 | 40.0 | 8.000 | O | 1 |
|---|---|---|---|---|---|---|---|
| 11361 | 4.0 | 52.0 | 4.0 | 40.0 | 7.582 | O | 1 |
| 11362 | 3.0 | 53.0 | 4.0 | 40.0 | 7.164 | O | 1 |
| 11363 | 2.0 | 54.0 | 4.0 | 40.0 | 6.746 | O | 1 |
| 11364 | 1.0 | 55.0 | 4.0 | 40.0 | 6.329 | O | 1 |
| 11365 | 0.0 | 56.0 | 4.0 | 40.0 | 5.911 | O | 1 |
| 11366 | 36.0 | 18.0 | 6.0 | 40.0 | 19.130 | X | 1 |
| 11367 | 35.7 | 18.3 | 6.0 | 40.0 | 19.023 | X | 1 |
| 11368 | 35.6 | 18.4 | 6.0 | 40.0 | 18.987 | O | 1 |
| 11369 | 35.0 | 19.0 | 6.0 | 40.0 | 18.773 | O | 1 |
| 11370 | 30.0 | 24.0 | 6.0 | 40.0 | 16.989 | O | 1 |
| 11371 | 20.0 | 34.0 | 6.0 | 40.0 | 13.421 | O | 1 |
| 11372 | 10.0 | 44.0 | 6.0 | 40.0 | 9.853 | O | 1 |
| 11373 | 9.0 | 45.0 | 6.0 | 40.0 | 9.473 | O | 1 |
| 11374 | 8.0 | 46.0 | 6.0 | 40.0 | 9.055 | O | 1 |
| 11375 | 7.0 | 47.0 | 6.0 | 40.0 | 8.637 | O | 1 |
| 11376 | 6.0 | 48.0 | 6.0 | 40.0 | 8.220 | O | 1 |
| 11377 | 5.0 | 49.0 | 6.0 | 40.0 | 7.802 | O | 1 |
| 11378 | 4.0 | 50.0 | 6.0 | 40.0 | 7.384 | O | 1 |
| 11379 | 3.0 | 51.0 | 6.0 | 40.0 | 6.966 | O | 1 |
| 11380 | 2.0 | 52.0 | 6.0 | 40.0 | 6.548 | O | 1 |
| 11381 | 1.0 | 53.0 | 6.0 | 40.0 | 6.130 | O | 1 |
| 11382 | 0.0 | 54.0 | 6.0 | 40.0 | 5.712 | O | 1 |
| 11383 | 37.0 | 15.0 | 8.0 | 40.0 | 19.274 | X | 1 |
| 11384 | 36.3 | 15.7 | 8.0 | 40.0 | 19.024 | X | 1 |
| 11385 | 36.2 | 15.8 | 8.0 | 40.0 | 18.988 | O | 1 |
| 11386 | 36.0 | 16.0 | 8.0 | 40.0 | 18.917 | O | 1 |
| 11387 | 30.0 | 22.0 | 8.0 | 40.0 | 16.776 | O | 1 |
| 11388 | 20.0 | 32.0 | 8.0 | 40.0 | 13.208 | O | 1 |
| 11389 | 10.0 | 42.0 | 8.0 | 40.0 | 9.640 | O | 1 |
| 11390 | 9.0 | 43.0 | 8.0 | 40.0 | 9.275 | O | 1 |
| 11391 | 8.0 | 44.0 | 8.0 | 40.0 | 8.857 | O | 1 |
| 11392 | 7.0 | 45.0 | 8.0 | 40.0 | 8.439 | O | 1 |
| 11393 | 6.0 | 46.0 | 8.0 | 40.0 | 8.021 | O | 1 |
| 11394 | 5.0 | 47.0 | 8.0 | 40.0 | 7.603 | O | 1 |
| 11395 | 4.0 | 48.0 | 8.0 | 40.0 | 7.185 | O | 1 |
| 11396 | 3.0 | 49.0 | 8.0 | 40.0 | 6.767 | O | 1 |
| 11397 | 2.0 | 50.0 | 8.0 | 40.0 | 6.349 | O | 1 |
| 11398 | 1.0 | 51.0 | 8.0 | 40.0 | 5.931 | O | 1 |
| 11399 | 0.0 | 52.0 | 8.0 | 40.0 | 5.513 | O | 1 |
| 11400 | 37.0 | 13.0 | 10.0 | 40.0 | 19.061 | X | 1 |
| 11401 | 36.9 | 13.1 | 10.0 | 40.0 | 19.025 | X | 1 |
| 11402 | 36.8 | 13.2 | 10.0 | 40.0 | 18.989 | O | 1 |
| 11403 | 36.0 | 14.0 | 10.0 | 40.0 | 18.704 | O | 1 |
| 11404 | 30.0 | 20.0 | 10.0 | 40.0 | 16.563 | O | 1 |
| 11405 | 20.0 | 30.0 | 10.0 | 40.0 | 12.995 | O | 1 |
| 11406 | 10.0 | 40.0 | 10.0 | 40.0 | 9.427 | O | 1 |
| 11407 | 9.0 | 41.0 | 10.0 | 40.0 | 9.070 | O | 1 |
| 11408 | 8.0 | 42.0 | 10.0 | 40.0 | 8.658 | O | 1 |
| 11409 | 7.0 | 43.0 | 10.0 | 40.0 | 8.240 | O | 1 |

[Table 211]

| 11410 | 6.0 | 44.0 | 10.0 | 40.0 | 7.822 | O | 1 |
|---|---|---|---|---|---|---|---|
| 11411 | 5.0 | 45.0 | 10.0 | 40.0 | 7.404 | O | 1 |
| 11412 | 4.0 | 46.0 | 10.0 | 40.0 | 6.987 | O | 1 |
| 11413 | 3.0 | 47.0 | 10.0 | 40.0 | 6.569 | O | 1 |
| 11414 | 2.0 | 48.0 | 10.0 | 40.0 | 6.151 | O | 1 |
| 11415 | 1.0 | 49.0 | 10.0 | 40.0 | 5.733 | O | 1 |
| 11416 | 0.0 | 50.0 | 10.0 | 40.0 | 5.315 | O | 1 |
| 11417 | 38.0 | 10.0 | 2.0 | 50.0 | 19.338 | X | 1 |
| 11418 | 37.2 | 10.8 | 2.0 | 50.0 | 19.052 | X | 1 |
| 11419 | 37.1 | 10.9 | 2.0 | 50.0 | 19.017 | X | 1 |
| 11420 | 37.0 | 11.0 | 2.0 | 50.0 | 18.981 | O | 1 |
| 11421 | 30.0 | 18.0 | 2.0 | 50.0 | 16.483 | O | 1 |
| 11422 | 20.0 | 28.0 | 2.0 | 50.0 | 12.915 | O | 1 |
| 11423 | 10.0 | 38.0 | 2.0 | 50.0 | 9.347 | O | 1 |
| 11424 | 9.0 | 39.0 | 2.0 | 50.0 | 8.965 | O | 1 |
| 11425 | 8.0 | 40.0 | 2.0 | 50.0 | 8.547 | O | 1 |
| 11426 | 7.0 | 41.0 | 2.0 | 50.0 | 8.129 | O | 1 |
| 11427 | 6.0 | 42.0 | 2.0 | 50.0 | 7.711 | O | 1 |
| 11428 | 5.0 | 43.0 | 2.0 | 50.0 | 7.293 | O | 1 |
| 11429 | 4.0 | 44.0 | 2.0 | 50.0 | 6.876 | O | 1 |
| 11430 | 3.0 | 45.0 | 2.0 | 50.0 | 6.458 | O | 1 |
| 11431 | 2.0 | 46.0 | 2.0 | 50.0 | 6.040 | O | 1 |
| 11432 | 1.0 | 47.0 | 2.0 | 50.0 | 5.622 | O | 1 |
| 11433 | 0.0 | 48.0 | 2.0 | 50.0 | 5.204 | O | 1 |
| 11434 | 38.0 | 8.0 | 4.0 | 50.0 | 19.125 | X | 1 |
| 11435 | 37.7 | 8.3 | 4.0 | 50.0 | 19.018 | X | 1 |
| 11436 | 37.6 | 8.4 | 4.0 | 50.0 | 18.982 | O | 1 |
| 11437 | 37.0 | 9.0 | 4.0 | 50.0 | 18.768 | O | 1 |
| 11438 | 30.0 | 16.0 | 4.0 | 50.0 | 16.270 | O | 1 |
| 11439 | 20.0 | 26.0 | 4.0 | 50.0 | 12.702 | O | 1 |
| 11440 | 10.0 | 36.0 | 4.0 | 50.0 | 9.134 | O | 1 |
| 11441 | 9.0 | 37.0 | 4.0 | 50.0 | 8.767 | O | 1 |
| 11442 | 8.0 | 38.0 | 4.0 | 50.0 | 8.349 | O | 1 |
| 11443 | 7.0 | 39.0 | 4.0 | 50.0 | 7.931 | O | 1 |
| 11444 | 6.0 | 40.0 | 4.0 | 50.0 | 7.513 | O | 1 |
| 11445 | 5.0 | 41.0 | 4.0 | 50.0 | 7.095 | O | 1 |
| 11446 | 4.0 | 42.0 | 4.0 | 50.0 | 6.677 | O | 1 |
| 11447 | 3.0 | 43.0 | 4.0 | 50.0 | 6.259 | O | 1 |
| 11448 | 2.0 | 44.0 | 4.0 | 50.0 | 5.841 | O | 1 |
| 11449 | 1.0 | 45.0 | 4.0 | 50.0 | 5.423 | O | 1 |
| 11450 | 0.0 | 46.0 | 4.0 | 50.0 | 5.005 | O | 1 |
| 11451 | 39.0 | 5.0 | 6.0 | 50.0 | 19.268 | X | 1 |
| 11452 | 38.3 | 5.7 | 6.0 | 50.0 | 19.019 | X | 1 |
| 11453 | 38.2 | 5.8 | 6.0 | 50.0 | 18.983 | O | 1 |
| 11454 | 38.0 | 6.0 | 6.0 | 50.0 | 18.912 | O | 1 |
| 11455 | 30.0 | 14.0 | 6.0 | 50.0 | 16.057 | O | 1 |
| 11456 | 20.0 | 24.0 | 6.0 | 50.0 | 12.489 | O | 1 |
| 11457 | 10.0 | 34.0 | 6.0 | 50.0 | 8.921 | O | 1 |
| 11458 | 9.0 | 35.0 | 6.0 | 50.0 | 8.564 | O | 1 |
| 11459 | 8.0 | 36.0 | 6.0 | 50.0 | 8.150 | O | 1 |

[Table 212]

| 11460 | 7.0 | 37.0 | 6.0 | 50.0 | 7.732 | O | 1 |
| 11461 | 6.0 | 38.0 | 6.0 | 50.0 | 7.314 | O | 1 |
| 11462 | 5.0 | 39.0 | 6.0 | 50.0 | 6.896 | O | 1 |
| 11463 | 4.0 | 40.0 | 6.0 | 50.0 | 6.478 | O | 1 |
| 11464 | 3.0 | 41.0 | 6.0 | 50.0 | 6.061 | O | 1 |
| 11465 | 2.0 | 42.0 | 6.0 | 50.0 | 5.643 | O | 1 |
| 11466 | 1.0 | 43.0 | 6.0 | 50.0 | 5.225 | O | 1 |
| 11467 | 0.0 | 44.0 | 6.0 | 50.0 | 4.807 | O | 1 |
| 11468 | 39.0 | 3.0 | 8.0 | 50.0 | 19.055 | X | 1 |
| 11469 | 38.9 | 3.1 | 8.0 | 50.0 | 19.020 | X | 1 |
| 11470 | 38.8 | 3.2 | 8.0 | 50.0 | 18.984 | O | 1 |
| 11471 | 38.0 | 4.0 | 8.0 | 50.0 | 18.698 | O | 1 |
| 11472 | 30.0 | 12.0 | 8.0 | 50.0 | 15.844 | O | 1 |
| 11473 | 20.0 | 22.0 | 8.0 | 50.0 | 12.276 | O | 1 |
| 11474 | 10.0 | 32.0 | 8.0 | 50.0 | 8.708 | O | 1 |
| 11475 | 9.0 | 33.0 | 8.0 | 50.0 | 8.351 | O | 1 |
| 11476 | 8.0 | 34.0 | 8.0 | 50.0 | 7.952 | O | 1 |
| 11477 | 7.0 | 35.0 | 8.0 | 50.0 | 7.534 | O | 1 |
| 11478 | 6.0 | 36.0 | 8.0 | 50.0 | 7.116 | O | 1 |
| 11479 | 5.0 | 37.0 | 8.0 | 50.0 | 6.698 | O | 1 |
| 11480 | 4.0 | 38.0 | 8.0 | 50.0 | 6.280 | O | 1 |
| 11481 | 3.0 | 39.0 | 8.0 | 50.0 | 5.862 | O | 1 |
| 11482 | 2.0 | 40.0 | 8.0 | 50.0 | 5.444 | O | 1 |
| 11483 | 1.0 | 41.0 | 8.0 | 50.0 | 5.026 | O | 1 |
| 11484 | 0.0 | 42.0 | 8.0 | 50.0 | 4.608 | O | 1 |
| 11485 | 40.0 | 0.0 | 10.0 | 50.0 | 19.199 | X | 1 |
| 11486 | 39.5 | 0.5 | 10.0 | 50.0 | 19.021 | X | 1 |
| 11487 | 39.4 | 0.6 | 10.0 | 50.0 | 18.985 | O | 1 |
| 11488 | 39.0 | 1.0 | 10.0 | 50.0 | 18.842 | O | 1 |
| 11489 | 30.0 | 10.0 | 10.0 | 50.0 | 15.631 | O | 1 |
| 11490 | 20.0 | 20.0 | 10.0 | 50.0 | 12.063 | O | 1 |
| 11491 | 10.0 | 30.0 | 10.0 | 50.0 | 8.495 | O | 1 |
| 11492 | 9.0 | 31.0 | 10.0 | 50.0 | 8.138 | O | 1 |
| 11493 | 8.0 | 32.0 | 10.0 | 50.0 | 7.753 | O | 1 |
| 11494 | 7.0 | 33.0 | 10.0 | 50.0 | 7.335 | O | 1 |
| 11495 | 6.0 | 34.0 | 10.0 | 50.0 | 6.917 | O | 1 |
| 11496 | 5.0 | 35.0 | 10.0 | 50.0 | 6.499 | O | 1 |
| 11497 | 4.0 | 36.0 | 10.0 | 50.0 | 6.081 | O | 1 |
| 11498 | 3.0 | 37.0 | 10.0 | 50.0 | 5.663 | O | 1 |
| 11499 | 2.0 | 38.0 | 10.0 | 50.0 | 5.245 | O | 1 |
| 11500 | 1.0 | 39.0 | 10.0 | 50.0 | 4.828 | O | 1 |
| 11501 | 0.0 | 40.0 | 10.0 | 50.0 | 4.410 | O | 1 |

Table 213 shows the composition, combustion heat amount, and GWP of the working medium of a two-component system of propane and HFO-1132(E).

[Table 213]

| Case | propane | HFO-1132(E) | Heat of Combustion | Evaluation | GWP |
|------|---------|-------------|--------------------|------------|-----|
| A1 | 10.0 | 90.0 | 19.259 | X | 1 |
| A2 | 9.2 | 90.8 | 19.019 | X | 1 |
| A3 | 9.1 | 90.9 | 18.989 | O | 1 |
| A4 | 9.0 | 91.0 | 18.959 | O | 1 |
| A5 | 8.0 | 92.0 | 18.658 | O | 1 |
| A6 | 7.0 | 93.0 | 18.357 | O | 1 |
| A7 | 6.0 | 94.0 | 18.056 | O | 1 |
| A8 | 5.0 | 95.0 | 17.755 | O | 1 |
| A9 | 4.0 | 96.0 | 17.454 | O | 1 |
| A10 | 3.0 | 97.0 | 17.154 | O | 1 |
| A11 | 2.0 | 98.0 | 16.853 | O | 1 |
| A12 | 1.0 | 99.0 | 16.552 | O | 1 |
| A13 | 0.0 | 100.0 | 16.251 | O | 1 |

Tables 214 to 234 show the composition, combustion heat amount, and GWP of the working medium of a three-component system of propane, HFO-1123, and HFO-1132(E).

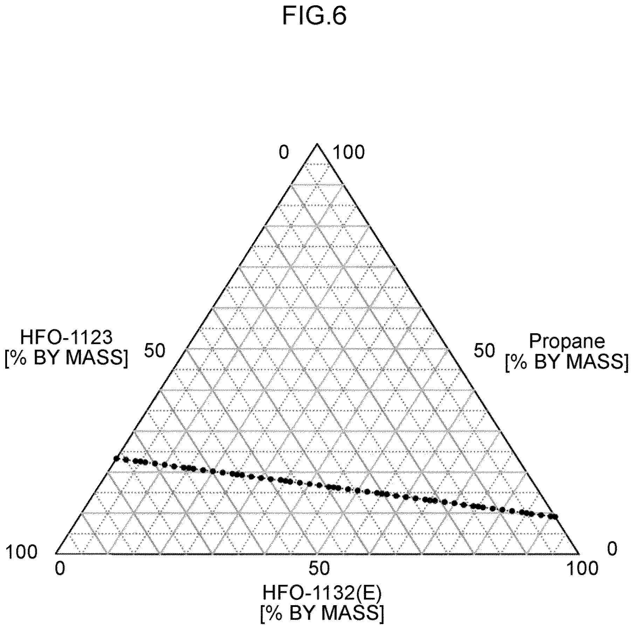

Fig. 6 shows a triangular diagram of a three-component system of propane, HFO-1123, and HFO-1132(E). Fig. 6 shows a straight line connecting (23.3, 76.7, 0.0) and (9.1, 0.0, 90.9) by (propane, HFO-1123, HFO-1132(E)). A region including this straight line and having a low propane concentration indicates a region where the combustion heat amount for the three-component system of propane, HFO-1123, and HFO-1132(E) is less than 19.000 MJ/kg, and a region having a higher propane concentration than the straight line indicates a region where the combustion heat amount for the three-component system of propane, HFO-1123, and HFO-1132(E) is 19.000 MJ/kg or more.

The straight line in Fig. 6 is also expressed as follows:

in the case of (Propane, HFO-1123, HFO-1132(E)) = (X, Y, Z),
(X, Y, Z) = (0.18605Y + 9.07645, Y, 90.92355 - 1.18605Y)
※ $Y \leq 76.7$.

[Table 214]

| Case | propane | HFO-1123 | HFO-1132(E) | Heat of Combustion | Evaluation | GWP |
|------|---------|----------|-------------|--------------------|------------|-----|
| A14 | 24.0 | 74.0 | 2.0 | 19.328 | X | 1 |
| A15 | 23.1 | 74.9 | 2.0 | 19.007 | X | 1 |
| A16 | 23.0 | 75.0 | 2.0 | 18.971 | O | 1 |
| A17 | 22.0 | 76.0 | 2.0 | 18.615 | O | 1 |
| A18 | 21.0 | 77.0 | 2.0 | 18.258 | O | 1 |
| A19 | 20.0 | 78.0 | 2.0 | 17.901 | O | 1 |
| A20 | 19.0 | 79.0 | 2.0 | 17.544 | O | 1 |
| A21 | 18.0 | 80.0 | 2.0 | 17.187 | O | 1 |
| A22 | 17.0 | 81.0 | 2.0 | 16.831 | O | 1 |
| A23 | 16.0 | 82.0 | 2.0 | 16.474 | O | 1 |
| A24 | 15.0 | 83.0 | 2.0 | 16.117 | O | 1 |
| A25 | 14.0 | 84.0 | 2.0 | 15.760 | O | 1 |
| A26 | 13.0 | 85.0 | 2.0 | 15.403 | O | 1 |
| A27 | 12.0 | 86.0 | 2.0 | 15.046 | O | 1 |
| A28 | 11.0 | 87.0 | 2.0 | 14.652 | O | 1 |
| A29 | 10.0 | 88.0 | 2.0 | 14.234 | O | 1 |
| A30 | 9.0 | 89.0 | 2.0 | 13.817 | O | 1 |
| A31 | 8.0 | 90.0 | 2.0 | 13.399 | O | 1 |
| A32 | 7.0 | 91.0 | 2.0 | 12.981 | O | 1 |
| A33 | 6.0 | 92.0 | 2.0 | 12.563 | O | 1 |
| A34 | 5.0 | 93.0 | 2.0 | 12.145 | O | 1 |
| A35 | 4.0 | 94.0 | 2.0 | 11.727 | O | 1 |
| A36 | 3.0 | 95.0 | 2.0 | 11.309 | O | 1 |
| A37 | 2.0 | 96.0 | 2.0 | 10.891 | O | 1 |
| A38 | 1.0 | 97.0 | 2.0 | 10.473 | O | 1 |
| A39 | 0.0 | 98.0 | 2.0 | 10.055 | O | 1 |
| A40 | 23.0 | 73.0 | 4.0 | 19.083 | X | 1 |
| A41 | 22.8 | 73.2 | 4.0 | 19.012 | X | 1 |
| A42 | 22.7 | 73.3 | 4.0 | 18.976 | O | 1 |
| A43 | 22.0 | 74.0 | 4.0 | 18.727 | O | 1 |
| A44 | 21.0 | 75.0 | 4.0 | 18.370 | O | 1 |
| A45 | 20.0 | 76.0 | 4.0 | 18.013 | O | 1 |
| A46 | 19.0 | 77.0 | 4.0 | 17.656 | O | 1 |
| A47 | 18.0 | 78.0 | 4.0 | 17.299 | O | 1 |
| A48 | 17.0 | 79.0 | 4.0 | 16.943 | O | 1 |
| A49 | 16.0 | 80.0 | 4.0 | 16.586 | O | 1 |
| A50 | 15.0 | 81.0 | 4.0 | 16.229 | O | 1 |
| A51 | 14.0 | 82.0 | 4.0 | 15.872 | O | 1 |
| A52 | 13.0 | 83.0 | 4.0 | 15.515 | O | 1 |
| A53 | 12.0 | 84.0 | 4.0 | 15.158 | O | 1 |
| A54 | 11.0 | 85.0 | 4.0 | 14.779 | O | 1 |
| A55 | 10.0 | 86.0 | 4.0 | 14.361 | O | 1 |
| A56 | 9.0 | 87.0 | 4.0 | 13.943 | O | 1 |
| A57 | 8.0 | 88.0 | 4.0 | 13.525 | O | 1 |
| A58 | 7.0 | 89.0 | 4.0 | 13.107 | O | 1 |
| A59 | 6.0 | 90.0 | 4.0 | 12.689 | O | 1 |
| A60 | 5.0 | 91.0 | 4.0 | 12.271 | O | 1 |
| A61 | 4.0 | 92.0 | 4.0 | 11.853 | O | 1 |
| A62 | 3.0 | 93.0 | 4.0 | 11.435 | O | 1 |
| A63 | 2.0 | 94.0 | 4.0 | 11.018 | O | 1 |

[Table 215]

| A64 | 1.0 | 95.0 | 4.0 | 10.600 | O | 1 |
|---|---|---|---|---|---|---|
| A65 | 0.0 | 96.0 | 4.0 | 10.182 | O | 1 |
| A66 | 23.0 | 72.0 | 5.0 | 19.139 | X | 1 |
| A67 | 22.7 | 72.3 | 5.0 | 19.032 | X | 1 |
| A68 | 22.6 | 72.4 | 5.0 | 18.997 | O | 1 |
| A69 | 22.0 | 73.0 | 5.0 | 18.783 | O | 1 |
| A70 | 21.0 | 74.0 | 5.0 | 18.426 | O | 1 |
| A71 | 20.0 | 75.0 | 5.0 | 18.069 | O | 1 |
| A72 | 19.0 | 76.0 | 5.0 | 17.712 | O | 1 |
| A73 | 18.0 | 77.0 | 5.0 | 17.355 | O | 1 |
| A74 | 17.0 | 78.0 | 5.0 | 16.998 | O | 1 |
| A75 | 16.0 | 79.0 | 5.0 | 16.642 | O | 1 |
| A76 | 15.0 | 80.0 | 5.0 | 16.285 | O | 1 |
| A77 | 14.0 | 81.0 | 5.0 | 15.928 | O | 1 |
| A78 | 13.0 | 82.0 | 5.0 | 15.571 | O | 1 |
| A79 | 12.0 | 83.0 | 5.0 | 15.214 | O | 1 |
| A80 | 11.0 | 84.0 | 5.0 | 14.842 | O | 1 |
| A81 | 10.0 | 85.0 | 5.0 | 14.424 | O | 1 |
| A82 | 9.0 | 86.0 | 5.0 | 14.006 | O | 1 |
| A83 | 8.0 | 87.0 | 5.0 | 13.588 | O | 1 |
| A84 | 7.0 | 88.0 | 5.0 | 13.170 | O | 1 |
| A85 | 6.0 | 89.0 | 5.0 | 12.752 | O | 1 |
| A86 | 5.0 | 90.0 | 5.0 | 12.335 | O | 1 |
| A87 | 4.0 | 91.0 | 5.0 | 11.917 | O | 1 |
| A88 | 3.0 | 92.0 | 5.0 | 11.499 | O | 1 |
| A89 | 2.0 | 93.0 | 5.0 | 11.081 | O | 1 |
| A90 | 1.0 | 94.0 | 5.0 | 10.663 | O | 1 |
| A91 | 0.0 | 95.0 | 5.0 | 10.245 | O | 1 |
| A92 | 23.0 | 71.0 | 6.0 | 19.195 | X | 1 |
| A93 | 22.5 | 71.5 | 6.0 | 19.017 | X | 1 |
| A94 | 22.4 | 71.6 | 6.0 | 18.981 | O | 1 |
| A95 | 22.0 | 72.0 | 6.0 | 18.839 | O | 1 |
| A96 | 21.0 | 73.0 | 6.0 | 18.482 | O | 1 |
| A97 | 20.0 | 74.0 | 6.0 | 18.125 | O | 1 |
| A98 | 19.0 | 75.0 | 6.0 | 17.768 | O | 1 |
| A99 | 18.0 | 76.0 | 6.0 | 17.411 | O | 1 |
| A100 | 17.0 | 77.0 | 6.0 | 17.054 | O | 1 |
| A101 | 16.0 | 78.0 | 6.0 | 16.608 | O | 1 |
| A102 | 15.0 | 79.0 | 6.0 | 16.341 | O | 1 |
| A103 | 14.0 | 80.0 | 6.0 | 15.984 | O | 1 |
| A104 | 13.0 | 81.0 | 6.0 | 15.627 | O | 1 |
| A105 | 12.0 | 82.0 | 6.0 | 15.270 | O | 1 |
| A106 | 11.0 | 83.0 | 6.0 | 14.905 | O | 1 |
| A107 | 10.0 | 84.0 | 6.0 | 14.487 | O | 1 |
| A108 | 9.0 | 85.0 | 6.0 | 14.069 | O | 1 |
| A109 | 8.0 | 86.0 | 6.0 | 13.651 | O | 1 |
| A110 | 7.0 | 87.0 | 6.0 | 13.234 | O | 1 |
| A111 | 6.0 | 88.0 | 6.0 | 12.816 | O | 1 |
| A112 | 5.0 | 89.0 | 6.0 | 12.398 | O | 1 |
| A113 | 4.0 | 90.0 | 6.0 | 11.980 | O | 1 |

[Table 216]

| | | | | | | |
|---|---|---|---|---|---|---|
| A114 | 3.0 | 91.0 | 6.0 | 11.562 | O | 1 |
| A115 | 2.0 | 92.0 | 6.0 | 11.144 | O | 1 |
| A116 | 1.0 | 93.0 | 6.0 | 10.726 | O | 1 |
| A117 | 0.0 | 94.0 | 6.0 | 10.308 | O | 1 |
| A118 | 23.0 | 69.0 | 8.0 | 19.307 | X | 1 |
| A119 | 22.2 | 69.8 | 8.0 | 19.022 | X | 1 |
| A120 | 22.1 | 69.9 | 8.0 | 18.986 | O | 1 |
| A121 | 22.0 | 70.0 | 8.0 | 18.951 | O | 1 |
| A122 | 21.0 | 71.0 | 8.0 | 18.594 | O | 1 |
| A123 | 20.0 | 72.0 | 8.0 | 18.237 | O | 1 |
| A124 | 19.0 | 73.0 | 8.0 | 17.880 | O | 1 |
| A125 | 18.0 | 74.0 | 8.0 | 17.523 | O | 1 |
| A126 | 17.0 | 75.0 | 8.0 | 17.166 | O | 1 |
| A127 | 16.0 | 76.0 | 8.0 | 16.810 | O | 1 |
| A128 | 15.0 | 77.0 | 8.0 | 16.453 | O | 1 |
| A129 | 14.0 | 78.0 | 8.0 | 16.096 | O | 1 |
| A130 | 13.0 | 79.0 | 8.0 | 15.739 | O | 1 |
| A131 | 12.0 | 80.0 | 8.0 | 15.382 | O | 1 |
| A132 | 11.0 | 81.0 | 8.0 | 15.026 | O | 1 |
| A133 | 10.0 | 82.0 | 8.0 | 14.614 | O | 1 |
| A134 | 9.0 | 83.0 | 8.0 | 14.196 | O | 1 |
| A135 | 8.0 | 84.0 | 8.0 | 13.778 | O | 1 |
| A136 | 7.0 | 85.0 | 8.0 | 13.360 | O | 1 |
| A137 | 6.0 | 86.0 | 8.0 | 12.942 | O | 1 |
| A138 | 5.0 | 87.0 | 8.0 | 12.524 | O | 1 |
| A139 | 4.0 | 88.0 | 8.0 | 12.106 | O | 1 |
| A140 | 3.0 | 89.0 | 8.0 | 11.688 | O | 1 |
| A141 | 2.0 | 90.0 | 8.0 | 11.270 | O | 1 |
| A142 | 1.0 | 91.0 | 8.0 | 10.853 | O | 1 |
| A143 | 0.0 | 92.0 | 8.0 | 10.435 | O | 1 |
| A144 | 22.0 | 68.0 | 10.0 | 19.062 | X | 1 |
| A145 | 21.9 | 68.1 | 10.0 | 19.027 | X | 1 |
| A146 | 21.8 | 68.2 | 10.0 | 18.991 | O | 1 |
| A147 | 21.0 | 69.0 | 10.0 | 18.706 | O | 1 |
| A148 | 20.0 | 70.0 | 10.0 | 18.349 | O | 1 |
| A149 | 19.0 | 71.0 | 10.0 | 17.992 | O | 1 |
| A150 | 18.0 | 72.0 | 10.0 | 17.635 | O | 1 |
| A151 | 17.0 | 73.0 | 10.0 | 17.278 | O | 1 |
| A152 | 16.0 | 74.0 | 10.0 | 16.922 | O | 1 |
| A153 | 15.0 | 75.0 | 10.0 | 16.565 | O | 1 |
| A154 | 14.0 | 76.0 | 10.0 | 16.208 | O | 1 |
| A155 | 13.0 | 77.0 | 10.0 | 15.851 | O | 1 |
| A156 | 12.0 | 78.0 | 10.0 | 15.494 | O | 1 |
| A157 | 11.0 | 79.0 | 10.0 | 15.138 | O | 1 |
| A158 | 10.0 | 80.0 | 10.0 | 14.740 | O | 1 |
| A159 | 9.0 | 81.0 | 10.0 | 14.322 | O | 1 |
| A160 | 8.0 | 82.0 | 10.0 | 13.904 | O | 1 |
| A161 | 7.0 | 83.0 | 10.0 | 13.486 | O | 1 |
| A162 | 6.0 | 84.0 | 10.0 | 13.069 | O | 1 |
| A163 | 5.0 | 85.0 | 10.0 | 12.651 | O | 1 |

[Table 217]

| A164 | 4.0 | 86.0 | 10.0 | 12.233 | O | 1 |
| A165 | 3.0 | 87.0 | 10.0 | 11.815 | O | 1 |
| A166 | 2.0 | 88.0 | 10.0 | 11.397 | O | 1 |
| A167 | 1.0 | 89.0 | 10.0 | 10.979 | O | 1 |
| A168 | 0.0 | 90.0 | 10.0 | 10.561 | O | 1 |
| A169 | 22.0 | 66.0 | 12.0 | 19.174 | X | 1 |
| A170 | 21.6 | 66.4 | 12.0 | 19.032 | X | 1 |
| A171 | 21.4 | 66.6 | 12.0 | 18.960 | O | 1 |
| A172 | 21.0 | 67.0 | 12.0 | 18.818 | O | 1 |
| A173 | 20.0 | 68.0 | 12.0 | 18.461 | O | 1 |
| A174 | 19.0 | 69.0 | 12.0 | 18.104 | O | 1 |
| A175 | 18.0 | 70.0 | 12.0 | 17.747 | O | 1 |
| A176 | 17.0 | 71.0 | 12.0 | 17.390 | O | 1 |
| A177 | 16.0 | 72.0 | 12.0 | 17.034 | O | 1 |
| A178 | 15.0 | 73.0 | 12.0 | 16.677 | O | 1 |
| A179 | 14.0 | 74.0 | 12.0 | 16.320 | O | 1 |
| A180 | 13.0 | 75.0 | 12.0 | 15.963 | O | 1 |
| A181 | 12.0 | 76.0 | 12.0 | 15.606 | O | 1 |
| A182 | 11.0 | 77.0 | 12.0 | 15.249 | O | 1 |
| A183 | 10.0 | 78.0 | 12.0 | 14.867 | O | 1 |
| A184 | 9.0 | 79.0 | 12.0 | 14.449 | O | 1 |
| A185 | 8.0 | 80.0 | 12.0 | 14.031 | O | 1 |
| A186 | 7.0 | 81.0 | 12.0 | 13.613 | O | 1 |
| A187 | 6.0 | 82.0 | 12.0 | 13.195 | O | 1 |
| A188 | 5.0 | 83.0 | 12.0 | 12.777 | O | 1 |
| A189 | 4.0 | 84.0 | 12.0 | 12.359 | O | 1 |
| A190 | 3.0 | 85.0 | 12.0 | 11.941 | O | 1 |
| A191 | 2.0 | 86.0 | 12.0 | 11.523 | O | 1 |
| A192 | 1.0 | 87.0 | 12.0 | 11.105 | O | 1 |
| A193 | 0.0 | 88.0 | 12.0 | 10.687 | O | 1 |
| A194 | 22.0 | 64.0 | 14.0 | 19.286 | X | 1 |
| A195 | 21.2 | 64.8 | 14.0 | 19.001 | X | 1 |
| A196 | 21.1 | 64.9 | 14.0 | 18.965 | O | 1 |
| A197 | 21.0 | 65.0 | 14.0 | 18.930 | O | 1 |
| A198 | 20.0 | 66.0 | 14.0 | 18.573 | O | 1 |
| A199 | 19.0 | 67.0 | 14.0 | 18.216 | O | 1 |
| A200 | 18.0 | 68.0 | 14.0 | 17.859 | O | 1 |
| A201 | 17.0 | 69.0 | 14.0 | 17.502 | O | 1 |
| A202 | 16.0 | 70.0 | 14.0 | 17.146 | O | 1 |
| A203 | 15.0 | 71.0 | 14.0 | 16.789 | O | 1 |
| A204 | 14.0 | 72.0 | 14.0 | 16.432 | O | 1 |
| A205 | 13.0 | 73.0 | 14.0 | 16.075 | O | 1 |
| A206 | 12.0 | 74.0 | 14.0 | 15.718 | O | 1 |
| A207 | 11.0 | 75.0 | 14.0 | 15.361 | O | 1 |
| A208 | 10.0 | 76.0 | 14.0 | 14.993 | O | 1 |
| A209 | 9.0 | 77.0 | 14.0 | 14.575 | O | 1 |
| A210 | 8.0 | 78.0 | 14.0 | 14.157 | O | 1 |
| A211 | 7.0 | 79.0 | 14.0 | 13.739 | O | 1 |
| A212 | 6.0 | 80.0 | 14.0 | 13.321 | O | 1 |
| A213 | 5.0 | 81.0 | 14.0 | 12.904 | O | 1 |

[Table 218]

| A214 | 4.0 | 82.0 | 14.0 | 12.486 | O | 1 |
|---|---|---|---|---|---|---|
| A215 | 3.0 | 83.0 | 14.0 | 12.068 | O | 1 |
| A216 | 2.0 | 84.0 | 14.0 | 11.650 | O | 1 |
| A217 | 1.0 | 85.0 | 14.0 | 11.232 | O | 1 |
| A218 | 0.0 | 86.0 | 14.0 | 10.814 | O | 1 |
| A219 | 22.0 | 63.0 | 15.0 | 19.342 | X | 1 |
| A220 | 21.1 | 63.9 | 15.0 | 19.021 | X | 1 |
| A221 | 21.0 | 64.0 | 15.0 | 18.986 | O | 1 |
| A222 | 20.0 | 65.0 | 15.0 | 18.629 | O | 1 |
| A223 | 19.0 | 66.0 | 15.0 | 18.272 | O | 1 |
| A224 | 18.0 | 67.0 | 15.0 | 17.915 | O | 1 |
| A225 | 17.0 | 68.0 | 15.0 | 17.558 | O | 1 |
| A226 | 16.0 | 69.0 | 15.0 | 17.202 | O | 1 |
| A227 | 15.0 | 70.0 | 15.0 | 16.845 | O | 1 |
| A228 | 14.0 | 71.0 | 15.0 | 16.488 | O | 1 |
| A229 | 13.0 | 72.0 | 15.0 | 16.131 | O | 1 |
| A230 | 12.0 | 73.0 | 15.0 | 15.774 | O | 1 |
| A231 | 11.0 | 74.0 | 15.0 | 15.417 | O | 1 |
| A232 | 10.0 | 75.0 | 15.0 | 15.056 | O | 1 |
| A233 | 9.0 | 76.0 | 15.0 | 14.638 | O | 1 |
| A234 | 8.0 | 77.0 | 15.0 | 14.220 | O | 1 |
| A235 | 7.0 | 78.0 | 15.0 | 13.803 | O | 1 |
| A236 | 6.0 | 79.0 | 15.0 | 13.385 | O | 1 |
| A237 | 5.0 | 80.0 | 15.0 | 12.967 | O | 1 |
| A238 | 4.0 | 81.0 | 15.0 | 12.549 | O | 1 |
| A239 | 3.0 | 82.0 | 15.0 | 12.131 | O | 1 |
| A240 | 2.0 | 83.0 | 15.0 | 11.713 | O | 1 |
| A241 | 1.0 | 84.0 | 15.0 | 11.295 | O | 1 |
| A242 | 0.0 | 85.0 | 15.0 | 10.877 | O | 1 |
| A243 | 21.0 | 63.0 | 16.0 | 19.042 | X | 1 |
| A244 | 20.9 | 63.1 | 16.0 | 19.006 | X | 1 |
| A245 | 20.8 | 63.2 | 16.0 | 18.970 | O | 1 |
| A246 | 20.0 | 64.0 | 16.0 | 18.685 | O | 1 |
| A247 | 19.0 | 65.0 | 16.0 | 18.328 | O | 1 |
| A248 | 18.0 | 66.0 | 16.0 | 17.971 | O | 1 |
| A249 | 17.0 | 67.0 | 16.0 | 17.614 | O | 1 |
| A250 | 16.0 | 68.0 | 16.0 | 17.257 | O | 1 |
| A251 | 15.0 | 69.0 | 16.0 | 16.901 | O | 1 |
| A252 | 14.0 | 70.0 | 16.0 | 16.544 | O | 1 |
| A253 | 13.0 | 71.0 | 16.0 | 16.187 | O | 1 |
| A254 | 12.0 | 72.0 | 16.0 | 15.830 | O | 1 |
| A255 | 11.0 | 73.0 | 16.0 | 15.473 | O | 1 |
| A256 | 10.0 | 74.0 | 16.0 | 15.117 | O | 1 |
| A257 | 9.0 | 75.0 | 16.0 | 14.702 | O | 1 |
| A258 | 8.0 | 76.0 | 16.0 | 14.284 | O | 1 |
| A259 | 7.0 | 77.0 | 16.0 | 13.866 | O | 1 |
| A260 | 6.0 | 78.0 | 16.0 | 13.448 | O | 1 |
| A261 | 5.0 | 79.0 | 16.0 | 13.030 | O | 1 |
| A262 | 4.0 | 80.0 | 16.0 | 12.612 | O | 1 |
| A263 | 3.0 | 81.0 | 16.0 | 12.194 | O | 1 |

[Table 219]

| | | | | | | |
|---|---|---|---|---|---|---|
| A264 | 2.0 | 82.0 | 16.0 | 11.776 | O | 1 |
| A265 | 1.0 | 83.0 | 16.0 | 11.358 | O | 1 |
| A266 | 0.0 | 84.0 | 16.0 | 10.940 | O | 1 |
| A267 | 21.0 | 61.0 | 18.0 | 19.154 | X | 1 |
| A268 | 20.6 | 61.4 | 18.0 | 19.011 | X | 1 |
| A269 | 20.5 | 61.5 | 18.0 | 18.975 | O | 1 |
| A270 | 20.0 | 62.0 | 18.0 | 18.797 | O | 1 |
| A271 | 19.0 | 63.0 | 18.0 | 18.440 | O | 1 |
| A272 | 18.0 | 64.0 | 18.0 | 18.083 | O | 1 |
| A273 | 17.0 | 65.0 | 18.0 | 17.726 | O | 1 |
| A274 | 16.0 | 66.0 | 18.0 | 17.369 | O | 1 |
| A275 | 15.0 | 67.0 | 18.0 | 17.013 | O | 1 |
| A276 | 14.0 | 68.0 | 18.0 | 16.656 | O | 1 |
| A277 | 13.0 | 69.0 | 18.0 | 16.299 | O | 1 |
| A278 | 12.0 | 70.0 | 18.0 | 15.942 | O | 1 |
| A279 | 11.0 | 71.0 | 18.0 | 15.585 | O | 1 |
| A280 | 10.0 | 72.0 | 18.0 | 15.229 | O | 1 |
| A281 | 9.0 | 73.0 | 18.0 | 14.828 | O | 1 |
| A282 | 8.0 | 74.0 | 18.0 | 14.410 | O | 1 |
| A283 | 7.0 | 75.0 | 18.0 | 13.992 | O | 1 |
| A284 | 6.0 | 76.0 | 18.0 | 13.574 | O | 1 |
| A285 | 5.0 | 77.0 | 18.0 | 13.156 | O | 1 |
| A286 | 4.0 | 78.0 | 18.0 | 12.738 | O | 1 |
| A287 | 3.0 | 79.0 | 18.0 | 12.321 | O | 1 |
| A288 | 2.0 | 80.0 | 18.0 | 11.903 | O | 1 |
| A289 | 1.0 | 81.0 | 18.0 | 11.485 | O | 1 |
| A290 | 0.0 | 82.0 | 18.0 | 11.067 | O | 1 |
| A291 | 21.0 | 59.0 | 20.0 | 19.265 | X | 1 |
| A292 | 20.3 | 59.7 | 20.0 | 19.016 | X | 1 |
| A293 | 20.2 | 59.8 | 20.0 | 18.980 | O | 1 |
| A294 | 20.0 | 60.0 | 20.0 | 18.909 | O | 1 |
| A295 | 19.0 | 61.0 | 20.0 | 18.552 | O | 1 |
| A296 | 18.0 | 62.0 | 20.0 | 18.195 | O | 1 |
| A297 | 17.0 | 63.0 | 20.0 | 17.838 | O | 1 |
| A298 | 16.0 | 64.0 | 20.0 | 17.481 | O | 1 |
| A299 | 15.0 | 65.0 | 20.0 | 17.125 | O | 1 |
| A300 | 14.0 | 66.0 | 20.0 | 16.768 | O | 1 |
| A301 | 13.0 | 67.0 | 20.0 | 16.411 | O | 1 |
| A302 | 12.0 | 68.0 | 20.0 | 16.054 | O | 1 |
| A303 | 11.0 | 69.0 | 20.0 | 15.697 | O | 1 |
| A304 | 10.0 | 70.0 | 20.0 | 15.341 | O | 1 |
| A305 | 9.0 | 71.0 | 20.0 | 14.955 | O | 1 |
| A306 | 8.0 | 72.0 | 20.0 | 14.537 | O | 1 |
| A307 | 7.0 | 73.0 | 20.0 | 14.119 | O | 1 |
| A308 | 6.0 | 74.0 | 20.0 | 13.701 | O | 1 |
| A309 | 5.0 | 75.0 | 20.0 | 13.283 | O | 1 |
| A310 | 4.0 | 76.0 | 20.0 | 12.865 | O | 1 |
| A311 | 3.0 | 77.0 | 20.0 | 12.447 | O | 1 |
| A312 | 2.0 | 78.0 | 20.0 | 12.029 | O | 1 |
| A313 | 1.0 | 79.0 | 20.0 | 11.611 | O | 1 |

[Table 220]

| A314 | 0.0 | 80.0 | 20.0 | 11.193 | O | 1 |
|------|-----|------|------|--------|---|---|
| A315 | 20.0 | 58.0 | 22.0 | 19.021 | X | 1 |
| A316 | 19.9 | 58.1 | 22.0 | 18.985 | O | 1 |
| A317 | 19.0 | 59.0 | 22.0 | 18.664 | O | 1 |
| A318 | 18.0 | 60.0 | 22.0 | 18.307 | O | 1 |
| A319 | 17.0 | 61.0 | 22.0 | 17.950 | O | 1 |
| A320 | 16.0 | 62.0 | 22.0 | 17.593 | O | 1 |
| A321 | 15.0 | 63.0 | 22.0 | 17.237 | O | 1 |
| A322 | 14.0 | 64.0 | 22.0 | 16.880 | O | 1 |
| A323 | 13.0 | 65.0 | 22.0 | 16.523 | O | 1 |
| A324 | 12.0 | 66.0 | 22.0 | 16.166 | O | 1 |
| A325 | 11.0 | 67.0 | 22.0 | 15.809 | O | 1 |
| A326 | 10.0 | 68.0 | 22.0 | 15.453 | O | 1 |
| A327 | 9.0 | 69.0 | 22.0 | 15.081 | O | 1 |
| A328 | 8.0 | 70.0 | 22.0 | 14.663 | O | 1 |
| A329 | 7.0 | 71.0 | 22.0 | 14.245 | O | 1 |
| A330 | 6.0 | 72.0 | 22.0 | 13.827 | O | 1 |
| A331 | 5.0 | 73.0 | 22.0 | 13.409 | O | 1 |
| A332 | 4.0 | 74.0 | 22.0 | 12.991 | O | 1 |
| A333 | 3.0 | 75.0 | 22.0 | 12.573 | O | 1 |
| A334 | 2.0 | 76.0 | 22.0 | 12.156 | O | 1 |
| A335 | 1.0 | 77.0 | 22.0 | 11.738 | O | 1 |
| A336 | 0.0 | 78.0 | 22.0 | 11.320 | O | 1 |
| A337 | 20.0 | 56.0 | 24.0 | 19.133 | X | 1 |
| A338 | 19.7 | 56.3 | 24.0 | 19.026 | X | 1 |
| A339 | 19.6 | 56.4 | 24.0 | 18.990 | O | 1 |
| A340 | 19.0 | 57.0 | 24.0 | 18.776 | O | 1 |
| A341 | 18.0 | 58.0 | 24.0 | 18.419 | O | 1 |
| A342 | 17.0 | 59.0 | 24.0 | 18.062 | O | 1 |
| A343 | 16.0 | 60.0 | 24.0 | 17.705 | O | 1 |
| A344 | 15.0 | 61.0 | 24.0 | 17.349 | O | 1 |
| A345 | 14.0 | 62.0 | 24.0 | 16.992 | O | 1 |
| A346 | 13.0 | 63.0 | 24.0 | 16.635 | O | 1 |
| A347 | 12.0 | 64.0 | 24.0 | 16.278 | O | 1 |
| A348 | 11.0 | 65.0 | 24.0 | 15.921 | O | 1 |
| A349 | 10.0 | 66.0 | 24.0 | 15.564 | O | 1 |
| A350 | 9.0 | 67.0 | 24.0 | 15.207 | O | 1 |
| A351 | 8.0 | 68.0 | 24.0 | 14.789 | O | 1 |
| A352 | 7.0 | 69.0 | 24.0 | 14.372 | O | 1 |
| A353 | 6.0 | 70.0 | 24.0 | 13.954 | O | 1 |
| A354 | 5.0 | 71.0 | 24.0 | 13.536 | O | 1 |
| A355 | 4.0 | 72.0 | 24.0 | 13.118 | O | 1 |
| A356 | 3.0 | 73.0 | 24.0 | 12.700 | O | 1 |
| A357 | 2.0 | 74.0 | 24.0 | 12.282 | O | 1 |
| A358 | 1.0 | 75.0 | 24.0 | 11.864 | O | 1 |
| A359 | 0.0 | 76.0 | 24.0 | 11.446 | O | 1 |
| A360 | 20.0 | 55.0 | 25.0 | 19.189 | X | 1 |
| A361 | 19.5 | 55.5 | 25.0 | 19.010 | X | 1 |
| A362 | 19.4 | 55.6 | 25.0 | 18.975 | O | 1 |
| A363 | 19.0 | 56.0 | 25.0 | 18.832 | O | 1 |

[Table 221]

| | | | | | | |
|------|------|------|------|--------|---|---|
| A364 | 18.0 | 57.0 | 25.0 | 18.475 | O | 1 |
| A365 | 17.0 | 58.0 | 25.0 | 18.118 | O | 1 |
| A366 | 16.0 | 59.0 | 25.0 | 17.761 | O | 1 |
| A367 | 15.0 | 60.0 | 25.0 | 17.405 | O | 1 |
| A368 | 14.0 | 61.0 | 25.0 | 17.048 | O | 1 |
| A369 | 13.0 | 62.0 | 25.0 | 16.691 | O | 1 |
| A370 | 12.0 | 63.0 | 25.0 | 16.334 | O | 1 |
| A371 | 11.0 | 64.0 | 25.0 | 15.977 | O | 1 |
| A372 | 10.0 | 65.0 | 25.0 | 15.620 | O | 1 |
| A373 | 9.0 | 66.0 | 25.0 | 15.264 | O | 1 |
| A374 | 8.0 | 67.0 | 25.0 | 14.853 | O | 1 |
| A375 | 7.0 | 68.0 | 25.0 | 14.435 | O | 1 |
| A376 | 6.0 | 69.0 | 25.0 | 14.017 | O | 1 |
| A377 | 5.0 | 70.0 | 25.0 | 13.599 | O | 1 |
| A378 | 4.0 | 71.0 | 25.0 | 13.181 | O | 1 |
| A379 | 3.0 | 72.0 | 25.0 | 12.763 | O | 1 |
| A380 | 2.0 | 73.0 | 25.0 | 12.345 | O | 1 |
| A381 | 1.0 | 74.0 | 25.0 | 11.927 | O | 1 |
| A382 | 0.0 | 75.0 | 25.0 | 11.509 | O | 1 |
| A383 | 20.0 | 54.0 | 26.0 | 19.245 | X | 1 |
| A384 | 19.4 | 54.6 | 26.0 | 19.030 | X | 1 |
| A385 | 19.3 | 54.7 | 26.0 | 18.995 | O | 1 |
| A386 | 19.0 | 55.0 | 26.0 | 18.888 | O | 1 |
| A387 | 18.0 | 56.0 | 26.0 | 18.531 | O | 1 |
| A388 | 17.0 | 57.0 | 26.0 | 18.174 | O | 1 |
| A389 | 16.0 | 58.0 | 26.0 | 17.817 | O | 1 |
| A390 | 15.0 | 59.0 | 26.0 | 17.461 | O | 1 |
| A391 | 14.0 | 60.0 | 26.0 | 17.104 | O | 1 |
| A392 | 13.0 | 61.0 | 26.0 | 16.747 | O | 1 |
| A393 | 12.0 | 62.0 | 26.0 | 16.390 | O | 1 |
| A394 | 11.0 | 63.0 | 26.0 | 16.033 | O | 1 |
| A395 | 10.0 | 64.0 | 26.0 | 15.676 | O | 1 |
| A396 | 9.0 | 65.0 | 26.0 | 15.320 | O | 1 |
| A397 | 8.0 | 66.0 | 26.0 | 14.916 | O | 1 |
| A398 | 7.0 | 67.0 | 26.0 | 14.498 | O | 1 |
| A399 | 6.0 | 68.0 | 26.0 | 14.080 | O | 1 |
| A400 | 5.0 | 69.0 | 26.0 | 13.662 | O | 1 |
| A401 | 4.0 | 70.0 | 26.0 | 13.244 | O | 1 |
| A402 | 3.0 | 71.0 | 26.0 | 12.826 | O | 1 |
| A403 | 2.0 | 72.0 | 26.0 | 12.408 | O | 1 |
| A404 | 1.0 | 73.0 | 26.0 | 11.991 | O | 1 |
| A405 | 0.0 | 74.0 | 26.0 | 11.573 | O | 1 |
| A406 | 19.0 | 53.0 | 28.0 | 19.000 | X | 1 |
| A407 | 18.9 | 53.1 | 28.0 | 18.964 | O | 1 |
| A408 | 18.0 | 54.0 | 28.0 | 18.643 | O | 1 |
| A409 | 17.0 | 55.0 | 28.0 | 18.286 | O | 1 |
| A410 | 16.0 | 56.0 | 28.0 | 17.929 | O | 1 |
| A411 | 15.0 | 57.0 | 28.0 | 17.572 | O | 1 |
| A412 | 14.0 | 58.0 | 28.0 | 17.216 | O | 1 |
| A413 | 13.0 | 59.0 | 28.0 | 16.859 | O | 1 |

[Table 222]

| A414 | 12.0 | 60.0 | 28.0 | 16.502 | O | 1 |
|---|---|---|---|---|---|---|
| A415 | 11.0 | 61.0 | 28.0 | 16.145 | O | 1 |
| A416 | 10.0 | 62.0 | 28.0 | 15.788 | O | 1 |
| A417 | 9.0 | 63.0 | 28.0 | 15.432 | O | 1 |
| A418 | 8.0 | 64.0 | 28.0 | 15.042 | O | 1 |
| A419 | 7.0 | 65.0 | 28.0 | 14.624 | O | 1 |
| A420 | 6.0 | 66.0 | 28.0 | 14.207 | O | 1 |
| A421 | 5.0 | 67.0 | 28.0 | 13.789 | O | 1 |
| A422 | 4.0 | 68.0 | 28.0 | 13.371 | O | 1 |
| A423 | 3.0 | 69.0 | 28.0 | 12.953 | O | 1 |
| A424 | 2.0 | 70.0 | 28.0 | 12.535 | O | 1 |
| A425 | 1.0 | 71.0 | 28.0 | 12.117 | O | 1 |
| A426 | 0.0 | 72.0 | 28.0 | 11.699 | O | 1 |
| A427 | 19.0 | 51.0 | 30.0 | 19.112 | X | 1 |
| A428 | 18.7 | 51.3 | 30.0 | 19.005 | X | 1 |
| A429 | 18.6 | 51.4 | 30.0 | 18.969 | O | 1 |
| A430 | 18.0 | 52.0 | 30.0 | 18.755 | O | 1 |
| A431 | 17.0 | 53.0 | 30.0 | 18.398 | O | 1 |
| A432 | 16.0 | 54.0 | 30.0 | 18.041 | O | 1 |
| A433 | 15.0 | 55.0 | 30.0 | 17.684 | O | 1 |
| A434 | 14.0 | 56.0 | 30.0 | 17.328 | O | 1 |
| A435 | 13.0 | 57.0 | 30.0 | 16.971 | O | 1 |
| A436 | 12.0 | 58.0 | 30.0 | 16.614 | O | 1 |
| A437 | 11.0 | 59.0 | 30.0 | 16.257 | O | 1 |
| A438 | 10.0 | 60.0 | 30.0 | 15.900 | O | 1 |
| A439 | 9.0 | 61.0 | 30.0 | 15.544 | O | 1 |
| A440 | 8.0 | 62.0 | 30.0 | 15.169 | O | 1 |
| A441 | 7.0 | 63.0 | 30.0 | 14.751 | O | 1 |
| A442 | 6.0 | 64.0 | 30.0 | 14.333 | O | 1 |
| A443 | 5.0 | 65.0 | 30.0 | 13.915 | O | 1 |
| A444 | 4.0 | 66.0 | 30.0 | 13.497 | O | 1 |
| A445 | 3.0 | 67.0 | 30.0 | 13.079 | O | 1 |
| A446 | 2.0 | 68.0 | 30.0 | 12.661 | O | 1 |
| A447 | 1.0 | 69.0 | 30.0 | 12.243 | O | 1 |
| A448 | 0.0 | 70.0 | 30.0 | 11.825 | O | 1 |
| A449 | 19.0 | 49.0 | 32.0 | 19.224 | X | 1 |
| A450 | 18.4 | 49.6 | 32.0 | 19.010 | X | 1 |
| A451 | 18.3 | 49.7 | 32.0 | 18.974 | O | 1 |
| A452 | 18.0 | 50.0 | 32.0 | 18.867 | O | 1 |
| A453 | 17.0 | 51.0 | 32.0 | 18.510 | O | 1 |
| A454 | 16.0 | 52.0 | 32.0 | 18.153 | O | 1 |
| A455 | 15.0 | 53.0 | 32.0 | 17.796 | O | 1 |
| A456 | 14.0 | 54.0 | 32.0 | 17.440 | O | 1 |
| A457 | 13.0 | 55.0 | 32.0 | 17.083 | O | 1 |
| A458 | 12.0 | 56.0 | 32.0 | 16.726 | O | 1 |
| A459 | 11.0 | 57.0 | 32.0 | 16.369 | O | 1 |
| A460 | 10.0 | 58.0 | 32.0 | 16.012 | O | 1 |
| A461 | 9.0 | 59.0 | 32.0 | 15.656 | O | 1 |
| A462 | 8.0 | 60.0 | 32.0 | 15.295 | O | 1 |
| A463 | 7.0 | 61.0 | 32.0 | 14.877 | O | 1 |

[Table 223]

| A464 | 6.0 | 62.0 | 32.0 | 14.459 | O | 1 |
|------|------|------|------|--------|---|---|
| A465 | 5.0 | 63.0 | 32.0 | 14.042 | O | 1 |
| A466 | 4.0 | 64.0 | 32.0 | 13.624 | O | 1 |
| A467 | 3.0 | 65.0 | 32.0 | 13.206 | O | 1 |
| A468 | 2.0 | 66.0 | 32.0 | 12.788 | O | 1 |
| A469 | 1.0 | 67.0 | 32.0 | 12.370 | O | 1 |
| A470 | 0.0 | 68.0 | 32.0 | 11.952 | O | 1 |
| A471 | 19.0 | 47.0 | 34.0 | 19.336 | X | 1 |
| A472 | 18.1 | 47.9 | 34.0 | 19.015 | X | 1 |
| A473 | 18.0 | 48.0 | 34.0 | 18.979 | O | 1 |
| A474 | 17.0 | 49.0 | 34.0 | 18.622 | O | 1 |
| A475 | 16.0 | 50.0 | 34.0 | 18.265 | O | 1 |
| A476 | 15.0 | 51.0 | 34.0 | 17.908 | O | 1 |
| A477 | 14.0 | 52.0 | 34.0 | 17.552 | O | 1 |
| A478 | 13.0 | 53.0 | 34.0 | 17.195 | O | 1 |
| A479 | 12.0 | 54.0 | 34.0 | 16.838 | O | 1 |
| A480 | 11.0 | 55.0 | 34.0 | 16.481 | O | 1 |
| A481 | 10.0 | 56.0 | 34.0 | 16.124 | O | 1 |
| A482 | 9.0 | 57.0 | 34.0 | 15.767 | O | 1 |
| A483 | 8.0 | 58.0 | 34.0 | 15.411 | O | 1 |
| A484 | 7.0 | 59.0 | 34.0 | 15.004 | O | 1 |
| A485 | 6.0 | 60.0 | 34.0 | 14.586 | O | 1 |
| A486 | 5.0 | 61.0 | 34.0 | 14.168 | O | 1 |
| A487 | 4.0 | 62.0 | 34.0 | 13.750 | O | 1 |
| A488 | 3.0 | 63.0 | 34.0 | 13.332 | O | 1 |
| A489 | 2.0 | 64.0 | 34.0 | 12.914 | O | 1 |
| A490 | 1.0 | 65.0 | 34.0 | 12.496 | O | 1 |
| A491 | 0.0 | 66.0 | 34.0 | 12.078 | O | 1 |
| A492 | 18.0 | 47.0 | 35.0 | 19.035 | X | 1 |
| A493 | 17.9 | 47.1 | 35.0 | 18.999 | O | 1 |
| A494 | 17.0 | 48.0 | 35.0 | 18.678 | O | 1 |
| A495 | 16.0 | 49.0 | 35.0 | 18.321 | O | 1 |
| A496 | 15.0 | 50.0 | 35.0 | 17.964 | O | 1 |
| A497 | 14.0 | 51.0 | 35.0 | 17.608 | O | 1 |
| A498 | 13.0 | 52.0 | 35.0 | 17.251 | O | 1 |
| A499 | 12.0 | 53.0 | 35.0 | 16.894 | O | 1 |
| A500 | 11.0 | 54.0 | 35.0 | 16.537 | O | 1 |
| A501 | 10.0 | 55.0 | 35.0 | 16.180 | O | 1 |
| A502 | 9.0 | 56.0 | 35.0 | 15.823 | O | 1 |
| A503 | 8.0 | 57.0 | 35.0 | 15.467 | O | 1 |
| A504 | 7.0 | 58.0 | 35.0 | 15.067 | O | 1 |
| A505 | 6.0 | 59.0 | 35.0 | 14.649 | O | 1 |
| A506 | 5.0 | 60.0 | 35.0 | 14.231 | O | 1 |
| A507 | 4.0 | 61.0 | 35.0 | 13.813 | O | 1 |
| A508 | 3.0 | 62.0 | 35.0 | 13.395 | O | 1 |
| A509 | 2.0 | 63.0 | 35.0 | 12.977 | O | 1 |
| A510 | 1.0 | 64.0 | 35.0 | 12.560 | O | 1 |
| A511 | 0.0 | 65.0 | 35.0 | 12.142 | O | 1 |
| A512 | 18.0 | 46.0 | 36.0 | 19.091 | X | 1 |
| A513 | 17.8 | 46.2 | 36.0 | 19.019 | X | 1 |

[Table 224]

241

| | | | | | | |
|---|---|---|---|---|---|---|
| A514 | 17.7 | 46.3 | 36.0 | 18.984 | O | 1 |
| A515 | 17.0 | 47.0 | 36.0 | 18.734 | O | 1 |
| A516 | 16.0 | 48.0 | 36.0 | 18.377 | O | 1 |
| A517 | 15.0 | 49.0 | 36.0 | 18.020 | O | 1 |
| A518 | 14.0 | 50.0 | 36.0 | 17.664 | O | 1 |
| A519 | 13.0 | 51.0 | 36.0 | 17.307 | O | 1 |
| A520 | 12.0 | 52.0 | 36.0 | 16.950 | O | 1 |
| A521 | 11.0 | 53.0 | 36.0 | 16.593 | O | 1 |
| A522 | 10.0 | 54.0 | 36.0 | 16.236 | O | 1 |
| A523 | 9.0 | 55.0 | 36.0 | 15.879 | O | 1 |
| A524 | 8.0 | 56.0 | 36.0 | 15.523 | O | 1 |
| A525 | 7.0 | 57.0 | 36.0 | 15.130 | O | 1 |
| A526 | 6.0 | 58.0 | 36.0 | 14.712 | O | 1 |
| A527 | 5.0 | 59.0 | 36.0 | 14.294 | O | 1 |
| A528 | 4.0 | 60.0 | 36.0 | 13.876 | O | 1 |
| A529 | 3.0 | 61.0 | 36.0 | 13.459 | O | 1 |
| A530 | 2.0 | 62.0 | 36.0 | 13.041 | O | 1 |
| A531 | 1.0 | 63.0 | 36.0 | 12.623 | O | 1 |
| A532 | 0.0 | 64.0 | 36.0 | 12.205 | O | 1 |
| A533 | 18.0 | 44.0 | 38.0 | 19.203 | X | 1 |
| A534 | 17.5 | 44.5 | 38.0 | 19.024 | X | 1 |
| A535 | 17.4 | 44.6 | 38.0 | 18.989 | O | 1 |
| A536 | 17.0 | 45.0 | 38.0 | 18.846 | O | 1 |
| A537 | 16.0 | 46.0 | 38.0 | 18.489 | O | 1 |
| A538 | 15.0 | 47.0 | 38.0 | 18.132 | O | 1 |
| A539 | 14.0 | 48.0 | 38.0 | 17.776 | O | 1 |
| A540 | 13.0 | 49.0 | 38.0 | 17.419 | O | 1 |
| A541 | 12.0 | 50.0 | 38.0 | 17.062 | O | 1 |
| A542 | 11.0 | 51.0 | 38.0 | 16.705 | O | 1 |
| A543 | 10.0 | 52.0 | 38.0 | 16.348 | O | 1 |
| A544 | 9.0 | 53.0 | 38.0 | 15.991 | O | 1 |
| A545 | 8.0 | 54.0 | 38.0 | 15.635 | O | 1 |
| A546 | 7.0 | 55.0 | 38.0 | 15.257 | O | 1 |
| A547 | 6.0 | 56.0 | 38.0 | 14.839 | O | 1 |
| A548 | 5.0 | 57.0 | 38.0 | 14.421 | O | 1 |
| A549 | 4.0 | 58.0 | 38.0 | 14.003 | O | 1 |
| A550 | 3.0 | 59.0 | 38.0 | 13.585 | O | 1 |
| A551 | 2.0 | 60.0 | 38.0 | 13.167 | O | 1 |
| A552 | 1.0 | 61.0 | 38.0 | 12.749 | O | 1 |
| A553 | 0.0 | 62.0 | 38.0 | 12.331 | O | 1 |
| A554 | 18.0 | 42.0 | 40.0 | 19.315 | X | 1 |
| A555 | 17.2 | 42.8 | 40.0 | 19.029 | X | 1 |
| A556 | 17.1 | 42.9 | 40.0 | 18.994 | O | 1 |
| A557 | 17.0 | 43.0 | 40.0 | 18.958 | O | 1 |
| A558 | 16.0 | 44.0 | 40.0 | 18.601 | O | 1 |
| A559 | 15.0 | 45.0 | 40.0 | 18.244 | O | 1 |
| A560 | 14.0 | 46.0 | 40.0 | 17.887 | O | 1 |
| A561 | 13.0 | 47.0 | 40.0 | 17.531 | O | 1 |
| A562 | 12.0 | 48.0 | 40.0 | 17.174 | O | 1 |
| A563 | 11.0 | 49.0 | 40.0 | 16.817 | O | 1 |

[Table 225]

| A564 | 10.0 | 50.0 | 40.0 | 16.460 | O | 1 |
|---|---|---|---|---|---|---|
| A565 | 9.0 | 51.0 | 40.0 | 16.103 | O | 1 |
| A566 | 8.0 | 52.0 | 40.0 | 15.747 | O | 1 |
| A567 | 7.0 | 53.0 | 40.0 | 15.383 | O | 1 |
| A568 | 6.0 | 54.0 | 40.0 | 14.965 | O | 1 |
| A569 | 5.0 | 55.0 | 40.0 | 14.547 | O | 1 |
| A570 | 4.0 | 56.0 | 40.0 | 14.129 | O | 1 |
| A571 | 3.0 | 57.0 | 40.0 | 13.711 | O | 1 |
| A572 | 2.0 | 58.0 | 40.0 | 13.294 | O | 1 |
| A573 | 1.0 | 59.0 | 40.0 | 12.876 | O | 1 |
| A574 | 0.0 | 60.0 | 40.0 | 12.458 | O | 1 |
| A575 | 17.0 | 41.0 | 42.0 | 19.070 | X | 1 |
| A576 | 16.9 | 41.1 | 42.0 | 19.034 | X | 1 |
| A577 | 16.8 | 41.2 | 42.0 | 18.999 | O | 1 |
| A578 | 16.0 | 42.0 | 42.0 | 18.713 | O | 1 |
| A579 | 15.0 | 43.0 | 42.0 | 18.356 | O | 1 |
| A580 | 14.0 | 44.0 | 42.0 | 17.999 | O | 1 |
| A581 | 13.0 | 45.0 | 42.0 | 17.643 | O | 1 |
| A582 | 12.0 | 46.0 | 42.0 | 17.286 | O | 1 |
| A583 | 11.0 | 47.0 | 42.0 | 16.929 | O | 1 |
| A584 | 10.0 | 48.0 | 42.0 | 16.572 | O | 1 |
| A585 | 9.0 | 49.0 | 42.0 | 16.215 | O | 1 |
| A586 | 8.0 | 50.0 | 42.0 | 15.859 | O | 1 |
| A587 | 7.0 | 51.0 | 42.0 | 15.502 | O | 1 |
| A588 | 6.0 | 52.0 | 42.0 | 15.092 | O | 1 |
| A589 | 5.0 | 53.0 | 42.0 | 14.674 | O | 1 |
| A590 | 4.0 | 54.0 | 42.0 | 14.256 | O | 1 |
| A591 | 3.0 | 55.0 | 42.0 | 13.838 | O | 1 |
| A592 | 2.0 | 56.0 | 42.0 | 13.420 | O | 1 |
| A593 | 1.0 | 57.0 | 42.0 | 13.002 | O | 1 |
| A594 | 0.0 | 58.0 | 42.0 | 12.584 | O | 1 |
| A595 | 17.0 | 39.0 | 44.0 | 19.182 | X | 1 |
| A596 | 16.5 | 39.5 | 44.0 | 19.003 | X | 1 |
| A597 | 16.4 | 39.6 | 44.0 | 18.968 | O | 1 |
| A598 | 16.0 | 40.0 | 44.0 | 18.825 | O | 1 |
| A599 | 15.0 | 41.0 | 44.0 | 18.468 | O | 1 |
| A600 | 14.0 | 42.0 | 44.0 | 18.111 | O | 1 |
| A601 | 13.0 | 43.0 | 44.0 | 17.755 | O | 1 |
| A602 | 12.0 | 44.0 | 44.0 | 17.398 | O | 1 |
| A603 | 11.0 | 45.0 | 44.0 | 17.041 | O | 1 |
| A604 | 10.0 | 46.0 | 44.0 | 16.684 | O | 1 |
| A605 | 9.0 | 47.0 | 44.0 | 16.327 | O | 1 |
| A606 | 8.0 | 48.0 | 44.0 | 15.971 | O | 1 |
| A607 | 7.0 | 49.0 | 44.0 | 15.614 | O | 1 |
| A608 | 6.0 | 50.0 | 44.0 | 15.218 | O | 1 |
| A609 | 5.0 | 51.0 | 44.0 | 14.800 | O | 1 |
| A610 | 4.0 | 52.0 | 44.0 | 14.382 | O | 1 |
| A611 | 3.0 | 53.0 | 44.0 | 13.964 | O | 1 |
| A612 | 2.0 | 54.0 | 44.0 | 13.546 | O | 1 |
| A613 | 1.0 | 55.0 | 44.0 | 13.129 | O | 1 |

[Table 226]

| A614 | 0.0 | 56.0 | 44.0 | 12.711 | O | 1 |
|------|------|------|------|--------|---|---|
| A615 | 17.0 | 38.0 | 45.0 | 19.238 | X | 1 |
| A616 | 16.4 | 38.6 | 45.0 | 19.024 | X | 1 |
| A617 | 16.3 | 38.7 | 45.0 | 18.988 | O | 1 |
| A618 | 16.0 | 39.0 | 45.0 | 18.881 | O | 1 |
| A619 | 15.0 | 40.0 | 45.0 | 18.524 | O | 1 |
| A620 | 14.0 | 41.0 | 45.0 | 18.167 | O | 1 |
| A621 | 13.0 | 42.0 | 45.0 | 17.811 | O | 1 |
| A622 | 12.0 | 43.0 | 45.0 | 17.454 | O | 1 |
| A623 | 11.0 | 44.0 | 45.0 | 17.097 | O | 1 |
| A624 | 10.0 | 45.0 | 45.0 | 16.740 | O | 1 |
| A625 | 9.0 | 46.0 | 45.0 | 16.383 | O | 1 |
| A626 | 8.0 | 47.0 | 45.0 | 16.027 | O | 1 |
| A627 | 7.0 | 48.0 | 45.0 | 15.670 | O | 1 |
| A628 | 6.0 | 49.0 | 45.0 | 15.281 | O | 1 |
| A629 | 5.0 | 50.0 | 45.0 | 14.863 | O | 1 |
| A630 | 4.0 | 51.0 | 45.0 | 14.446 | O | 1 |
| A631 | 3.0 | 52.0 | 45.0 | 14.028 | O | 1 |
| A632 | 2.0 | 53.0 | 45.0 | 13.610 | O | 1 |
| A633 | 1.0 | 54.0 | 45.0 | 13.192 | O | 1 |
| A634 | 0.0 | 55.0 | 45.0 | 12.774 | O | 1 |
| A635 | 17.0 | 37.0 | 46.0 | 19.294 | X | 1 |
| A636 | 16.2 | 37.8 | 46.0 | 19.008 | X | 1 |
| A637 | 16.1 | 37.9 | 46.0 | 18.973 | O | 1 |
| A638 | 16.0 | 38.0 | 46.0 | 18.937 | O | 1 |
| A639 | 15.0 | 39.0 | 46.0 | 18.580 | O | 1 |
| A640 | 14.0 | 40.0 | 46.0 | 18.223 | O | 1 |
| A641 | 13.0 | 41.0 | 46.0 | 17.867 | O | 1 |
| A642 | 12.0 | 42.0 | 46.0 | 17.510 | O | 1 |
| A643 | 11.0 | 43.0 | 46.0 | 17.153 | O | 1 |
| A644 | 10.0 | 44.0 | 46.0 | 16.796 | O | 1 |
| A645 | 9.0 | 45.0 | 46.0 | 16.439 | O | 1 |
| A646 | 8.0 | 46.0 | 46.0 | 16.082 | O | 1 |
| A647 | 7.0 | 47.0 | 46.0 | 15.726 | O | 1 |
| A648 | 6.0 | 48.0 | 46.0 | 15.345 | O | 1 |
| A649 | 5.0 | 49.0 | 46.0 | 14.927 | O | 1 |
| A650 | 4.0 | 50.0 | 46.0 | 14.509 | O | 1 |
| A651 | 3.0 | 51.0 | 46.0 | 14.091 | O | 1 |
| A652 | 2.0 | 52.0 | 46.0 | 13.673 | O | 1 |
| A653 | 1.0 | 53.0 | 46.0 | 13.255 | O | 1 |
| A654 | 0.0 | 54.0 | 46.0 | 12.837 | O | 1 |
| A655 | 16.0 | 36.0 | 48.0 | 19.049 | X | 1 |
| A656 | 15.9 | 36.1 | 48.0 | 19.013 | X | 1 |
| A657 | 15.8 | 36.2 | 48.0 | 18.978 | O | 1 |
| A658 | 15.0 | 37.0 | 48.0 | 18.692 | O | 1 |
| A659 | 14.0 | 38.0 | 48.0 | 18.335 | O | 1 |
| A660 | 13.0 | 39.0 | 48.0 | 17.979 | O | 1 |
| A661 | 12.0 | 40.0 | 48.0 | 17.622 | O | 1 |
| A662 | 11.0 | 41.0 | 48.0 | 17.265 | O | 1 |
| A663 | 10.0 | 42.0 | 48.0 | 16.908 | O | 1 |

[Table 227]

| | | | | | | |
|---|---|---|---|---|---|---|
| A664 | 9.0 | 43.0 | 48.0 | 16.551 | O | 1 |
| A665 | 8.0 | 44.0 | 48.0 | 16.194 | O | 1 |
| A666 | 7.0 | 45.0 | 48.0 | 15.838 | O | 1 |
| A667 | 6.0 | 46.0 | 48.0 | 15.471 | O | 1 |
| A668 | 5.0 | 47.0 | 48.0 | 15.053 | O | 1 |
| A669 | 4.0 | 48.0 | 48.0 | 14.635 | O | 1 |
| A670 | 3.0 | 49.0 | 48.0 | 14.217 | O | 1 |
| A671 | 2.0 | 50.0 | 48.0 | 13.799 | O | 1 |
| A672 | 1.0 | 51.0 | 48.0 | 13.381 | O | 1 |
| A673 | 0.0 | 52.0 | 48.0 | 12.964 | O | 1 |
| A674 | 16.0 | 34.0 | 50.0 | 19.161 | X | 1 |
| A675 | 15.6 | 34.4 | 50.0 | 19.018 | X | 1 |
| A676 | 15.5 | 34.5 | 50.0 | 18.983 | O | 1 |
| A677 | 15.0 | 35.0 | 50.0 | 18.804 | O | 1 |
| A678 | 14.0 | 36.0 | 50.0 | 18.447 | O | 1 |
| A679 | 13.0 | 37.0 | 50.0 | 18.090 | O | 1 |
| A680 | 12.0 | 38.0 | 50.0 | 17.734 | O | 1 |
| A681 | 11.0 | 39.0 | 50.0 | 17.377 | O | 1 |
| A682 | 10.0 | 40.0 | 50.0 | 17.020 | O | 1 |
| A683 | 9.0 | 41.0 | 50.0 | 16.663 | O | 1 |
| A684 | 8.0 | 42.0 | 50.0 | 16.306 | O | 1 |
| A685 | 7.0 | 43.0 | 50.0 | 15.950 | O | 1 |
| A686 | 6.0 | 44.0 | 50.0 | 15.593 | O | 1 |
| A687 | 5.0 | 45.0 | 50.0 | 15.180 | O | 1 |
| A688 | 4.0 | 46.0 | 50.0 | 14.762 | O | 1 |
| A689 | 3.0 | 47.0 | 50.0 | 14.344 | O | 1 |
| A690 | 2.0 | 48.0 | 50.0 | 13.926 | O | 1 |
| A691 | 1.0 | 49.0 | 50.0 | 13.508 | O | 1 |
| A692 | 0.0 | 50.0 | 50.0 | 13.090 | O | 1 |
| A693 | 16.0 | 32.0 | 52.0 | 19.273 | X | 1 |
| A694 | 15.3 | 32.7 | 52.0 | 19.023 | X | 1 |
| A695 | 15.2 | 32.8 | 52.0 | 18.987 | O | 1 |
| A696 | 15.0 | 33.0 | 52.0 | 18.916 | O | 1 |
| A697 | 14.0 | 34.0 | 52.0 | 18.559 | O | 1 |
| A698 | 13.0 | 35.0 | 52.0 | 18.202 | O | 1 |
| A699 | 12.0 | 36.0 | 52.0 | 17.846 | O | 1 |
| A700 | 11.0 | 37.0 | 52.0 | 17.489 | O | 1 |
| A701 | 10.0 | 38.0 | 52.0 | 17.132 | O | 1 |
| A702 | 9.0 | 39.0 | 52.0 | 16.775 | O | 1 |
| A703 | 8.0 | 40.0 | 52.0 | 16.418 | O | 1 |
| A704 | 7.0 | 41.0 | 52.0 | 16.062 | O | 1 |
| A705 | 6.0 | 42.0 | 52.0 | 15.705 | O | 1 |
| A706 | 5.0 | 43.0 | 52.0 | 15.306 | O | 1 |
| A707 | 4.0 | 44.0 | 52.0 | 14.888 | O | 1 |
| A708 | 3.0 | 45.0 | 52.0 | 14.470 | O | 1 |
| A709 | 2.0 | 46.0 | 52.0 | 14.052 | O | 1 |
| A710 | 1.0 | 47.0 | 52.0 | 13.634 | O | 1 |
| A711 | 0.0 | 48.0 | 52.0 | 13.216 | O | 1 |
| A712 | 15.0 | 31.0 | 54.0 | 19.028 | X | 1 |
| A713 | 14.9 | 31.1 | 54.0 | 18.992 | O | 1 |

[Table 228]

| | | | | | | |
|---|---|---|---|---|---|---|
| A714 | 14.0 | 32.0 | 54.0 | 18.671 | O | 1 |
| A715 | 13.0 | 33.0 | 54.0 | 18.314 | O | 1 |
| A716 | 12.0 | 34.0 | 54.0 | 17.958 | O | 1 |
| A717 | 11.0 | 35.0 | 54.0 | 17.601 | O | 1 |
| A718 | 10.0 | 36.0 | 54.0 | 17.244 | O | 1 |
| A719 | 9.0 | 37.0 | 54.0 | 16.887 | O | 1 |
| A720 | 8.0 | 38.0 | 54.0 | 16.530 | O | 1 |
| A721 | 7.0 | 39.0 | 54.0 | 16.174 | O | 1 |
| A722 | 6.0 | 40.0 | 54.0 | 15.817 | O | 1 |
| A723 | 5.0 | 41.0 | 54.0 | 15.432 | O | 1 |
| A724 | 4.0 | 42.0 | 54.0 | 15.015 | O | 1 |
| A725 | 3.0 | 43.0 | 54.0 | 14.597 | O | 1 |
| A726 | 2.0 | 44.0 | 54.0 | 14.179 | O | 1 |
| A727 | 1.0 | 45.0 | 54.0 | 13.761 | O | 1 |
| A728 | 0.0 | 46.0 | 54.0 | 13.343 | O | 1 |
| A729 | 15.0 | 30.0 | 55.0 | 19.084 | X | 1 |
| A730 | 14.8 | 30.2 | 55.0 | 19.013 | X | 1 |
| A731 | 14.7 | 30.3 | 55.0 | 18.977 | O | 1 |
| A732 | 14.0 | 31.0 | 55.0 | 18.727 | O | 1 |
| A733 | 13.0 | 32.0 | 55.0 | 18.370 | O | 1 |
| A734 | 12.0 | 33.0 | 55.0 | 18.014 | O | 1 |
| A735 | 11.0 | 34.0 | 55.0 | 17.657 | O | 1 |
| A736 | 10.0 | 35.0 | 55.0 | 17.300 | O | 1 |
| A737 | 9.0 | 36.0 | 55.0 | 16.943 | O | 1 |
| A738 | 8.0 | 37.0 | 55.0 | 16.586 | O | 1 |
| A739 | 7.0 | 38.0 | 55.0 | 16.230 | O | 1 |
| A740 | 6.0 | 39.0 | 55.0 | 15.873 | O | 1 |
| A741 | 5.0 | 40.0 | 55.0 | 15.496 | O | 1 |
| A742 | 4.0 | 41.0 | 55.0 | 15.078 | O | 1 |
| A743 | 3.0 | 42.0 | 55.0 | 14.660 | O | 1 |
| A744 | 2.0 | 43.0 | 55.0 | 14.242 | O | 1 |
| A745 | 1.0 | 44.0 | 55.0 | 13.824 | O | 1 |
| A746 | 0.0 | 45.0 | 55.0 | 13.406 | O | 1 |
| A747 | 15.0 | 29.0 | 56.0 | 19.140 | X | 1 |
| A748 | 14.7 | 29.3 | 56.0 | 19.033 | X | 1 |
| A749 | 14.6 | 29.4 | 56.0 | 18.997 | O | 1 |
| A750 | 14.0 | 30.0 | 56.0 | 18.783 | O | 1 |
| A751 | 13.0 | 31.0 | 56.0 | 18.426 | O | 1 |
| A752 | 12.0 | 32.0 | 56.0 | 18.070 | O | 1 |
| A753 | 11.0 | 33.0 | 56.0 | 17.713 | O | 1 |
| A754 | 10.0 | 34.0 | 56.0 | 17.356 | O | 1 |
| A755 | 9.0 | 35.0 | 56.0 | 16.999 | O | 1 |
| A756 | 8.0 | 36.0 | 56.0 | 16.642 | O | 1 |
| A757 | 7.0 | 37.0 | 56.0 | 16.286 | O | 1 |
| A758 | 6.0 | 38.0 | 56.0 | 15.929 | O | 1 |
| A759 | 5.0 | 39.0 | 56.0 | 15.559 | O | 1 |
| A760 | 4.0 | 40.0 | 56.0 | 15.141 | O | 1 |
| A761 | 3.0 | 41.0 | 56.0 | 14.723 | O | 1 |
| A762 | 2.0 | 42.0 | 56.0 | 14.305 | O | 1 |
| A763 | 1.0 | 43.0 | 56.0 | 13.887 | O | 1 |

[Table 229]

| A764 | 0.0 | 44.0 | 56.0 | 13.469 | O | 1 |
|------|------|------|------|--------|---|---|
| A765 | 15.0 | 27.0 | 58.0 | 19.252 | X | 1 |
| A766 | 14.3 | 27.7 | 58.0 | 19.002 | X | 1 |
| A767 | 14.2 | 27.8 | 58.0 | 18.967 | O | 1 |
| A768 | 14.0 | 28.0 | 58.0 | 18.895 | O | 1 |
| A769 | 13.0 | 29.0 | 58.0 | 18.538 | O | 1 |
| A770 | 12.0 | 30.0 | 58.0 | 18.182 | O | 1 |
| A771 | 11.0 | 31.0 | 58.0 | 17.825 | O | 1 |
| A772 | 10.0 | 32.0 | 58.0 | 17.468 | O | 1 |
| A773 | 9.0 | 33.0 | 58.0 | 17.111 | O | 1 |
| A774 | 8.0 | 34.0 | 58.0 | 16.754 | O | 1 |
| A775 | 7.0 | 35.0 | 58.0 | 16.397 | O | 1 |
| A776 | 6.0 | 36.0 | 58.0 | 16.041 | O | 1 |
| A777 | 5.0 | 37.0 | 58.0 | 15.684 | O | 1 |
| A778 | 4.0 | 38.0 | 58.0 | 15.267 | O | 1 |
| A779 | 3.0 | 39.0 | 58.0 | 14.849 | O | 1 |
| A780 | 2.0 | 40.0 | 58.0 | 14.432 | O | 1 |
| A781 | 1.0 | 41.0 | 58.0 | 14.014 | O | 1 |
| A782 | 0.0 | 42.0 | 58.0 | 13.596 | O | 1 |
| A783 | 14.0 | 26.0 | 60.0 | 19.007 | X | 1 |
| A784 | 13.9 | 26.1 | 60.0 | 18.971 | O | 1 |
| A785 | 13.0 | 27.0 | 60.0 | 18.650 | O | 1 |
| A786 | 12.0 | 28.0 | 60.0 | 18.294 | O | 1 |
| A787 | 11.0 | 29.0 | 60.0 | 17.937 | O | 1 |
| A788 | 10.0 | 30.0 | 60.0 | 17.580 | O | 1 |
| A789 | 9.0 | 31.0 | 60.0 | 17.223 | O | 1 |
| A790 | 8.0 | 32.0 | 60.0 | 16.866 | O | 1 |
| A791 | 7.0 | 33.0 | 60.0 | 16.509 | O | 1 |
| A792 | 6.0 | 34.0 | 60.0 | 16.153 | O | 1 |
| A793 | 5.0 | 35.0 | 60.0 | 15.796 | O | 1 |
| A794 | 4.0 | 36.0 | 60.0 | 15.394 | O | 1 |
| A795 | 3.0 | 37.0 | 60.0 | 14.976 | O | 1 |
| A796 | 2.0 | 38.0 | 60.0 | 14.558 | O | 1 |
| A797 | 1.0 | 39.0 | 60.0 | 14.140 | O | 1 |
| A798 | 0.0 | 40.0 | 60.0 | 13.722 | O | 1 |
| A799 | 14.0 | 24.0 | 62.0 | 19.119 | X | 1 |
| A800 | 13.7 | 24.3 | 62.0 | 19.012 | X | 1 |
| A801 | 13.6 | 24.4 | 62.0 | 18.976 | O | 1 |
| A802 | 13.0 | 25.0 | 62.0 | 18.762 | O | 1 |
| A803 | 12.0 | 26.0 | 62.0 | 18.405 | O | 1 |
| A804 | 11.0 | 27.0 | 62.0 | 18.049 | O | 1 |
| A805 | 10.0 | 28.0 | 62.0 | 17.692 | O | 1 |
| A806 | 9.0 | 29.0 | 62.0 | 17.335 | O | 1 |
| A807 | 8.0 | 30.0 | 62.0 | 16.978 | O | 1 |
| A808 | 7.0 | 31.0 | 62.0 | 16.621 | O | 1 |
| A809 | 6.0 | 32.0 | 62.0 | 16.265 | O | 1 |
| A810 | 5.0 | 33.0 | 62.0 | 15.908 | O | 1 |
| A811 | 4.0 | 34.0 | 62.0 | 15.520 | O | 1 |
| A812 | 3.0 | 35.0 | 62.0 | 15.102 | O | 1 |
| A813 | 2.0 | 36.0 | 62.0 | 14.684 | O | 1 |

[Table 230]

| A814 | 1.0 | 37.0 | 62.0 | 14.267 | O | 1 |
| A815 | 0.0 | 38.0 | 62.0 | 13.849 | O | 1 |
| A816 | 14.0 | 22.0 | 64.0 | 19.231 | X | 1 |
| A817 | 13.4 | 22.6 | 64.0 | 19.017 | X | 1 |
| A818 | 13.3 | 22.7 | 64.0 | 18.981 | O | 1 |
| A819 | 13.0 | 23.0 | 64.0 | 18.874 | O | 1 |
| A820 | 12.0 | 24.0 | 64.0 | 18.517 | O | 1 |
| A821 | 11.0 | 25.0 | 64.0 | 18.161 | O | 1 |
| A822 | 10.0 | 26.0 | 64.0 | 17.804 | O | 1 |
| A823 | 9.0 | 27.0 | 64.0 | 17.447 | O | 1 |
| A824 | 8.0 | 28.0 | 64.0 | 17.090 | O | 1 |
| A825 | 7.0 | 29.0 | 64.0 | 16.733 | O | 1 |
| A826 | 6.0 | 30.0 | 64.0 | 16.377 | O | 1 |
| A827 | 5.0 | 31.0 | 64.0 | 16.020 | O | 1 |
| A828 | 4.0 | 32.0 | 64.0 | 15.647 | O | 1 |
| A829 | 3.0 | 33.0 | 64.0 | 15.229 | O | 1 |
| A830 | 2.0 | 34.0 | 64.0 | 14.811 | O | 1 |
| A831 | 1.0 | 35.0 | 64.0 | 14.393 | O | 1 |
| A832 | 0.0 | 36.0 | 64.0 | 13.975 | O | 1 |
| A833 | 14.0 | 21.0 | 65.0 | 19.287 | X | 1 |
| A834 | 13.2 | 21.8 | 65.0 | 19.002 | X | 1 |
| A835 | 13.1 | 21.9 | 65.0 | 18.966 | O | 1 |
| A836 | 13.0 | 22.0 | 65.0 | 18.930 | O | 1 |
| A837 | 12.0 | 23.0 | 65.0 | 18.573 | O | 1 |
| A838 | 11.0 | 24.0 | 65.0 | 18.217 | O | 1 |
| A839 | 10.0 | 25.0 | 65.0 | 17.860 | O | 1 |
| A840 | 9.0 | 26.0 | 65.0 | 17.503 | O | 1 |
| A841 | 8.0 | 27.0 | 65.0 | 17.146 | O | 1 |
| A842 | 7.0 | 28.0 | 65.0 | 16.789 | O | 1 |
| A843 | 6.0 | 29.0 | 65.0 | 16.433 | O | 1 |
| A844 | 5.0 | 30.0 | 65.0 | 16.076 | O | 1 |
| A845 | 4.0 | 31.0 | 65.0 | 15.710 | O | 1 |
| A846 | 3.0 | 32.0 | 65.0 | 15.292 | O | 1 |
| A847 | 2.0 | 33.0 | 65.0 | 14.874 | O | 1 |
| A848 | 1.0 | 34.0 | 65.0 | 14.456 | O | 1 |
| A849 | 0.0 | 35.0 | 65.0 | 14.038 | O | 1 |
| A850 | 14.0 | 20.0 | 66.0 | 19.343 | X | 1 |
| A851 | 13.1 | 20.9 | 66.0 | 19.022 | X | 1 |
| A852 | 13.0 | 21.0 | 66.0 | 18.986 | O | 1 |
| A853 | 12.0 | 22.0 | 66.0 | 18.629 | O | 1 |
| A854 | 11.0 | 23.0 | 66.0 | 18.273 | O | 1 |
| A855 | 10.0 | 24.0 | 66.0 | 17.916 | O | 1 |
| A856 | 9.0 | 25.0 | 66.0 | 17.559 | O | 1 |
| A857 | 8.0 | 26.0 | 66.0 | 17.202 | O | 1 |
| A858 | 7.0 | 27.0 | 66.0 | 16.845 | O | 1 |
| A859 | 6.0 | 28.0 | 66.0 | 16.489 | O | 1 |
| A860 | 5.0 | 29.0 | 66.0 | 16.132 | O | 1 |
| A861 | 4.0 | 30.0 | 66.0 | 15.773 | O | 1 |
| A862 | 3.0 | 31.0 | 66.0 | 15.355 | O | 1 |
| A863 | 2.0 | 32.0 | 66.0 | 14.937 | O | 1 |

[Table 231]

| A864 | 1.0 | 33.0 | 66.0 | 14.519 | O | 1 |
|---|---|---|---|---|---|---|
| A865 | 0.0 | 34.0 | 66.0 | 14.102 | O | 1 |
| A866 | 13.0 | 19.0 | 68.0 | 19.098 | X | 1 |
| A867 | 12.8 | 19.2 | 68.0 | 19.027 | X | 1 |
| A868 | 12.7 | 19.3 | 68.0 | 18.991 | O | 1 |
| A869 | 12.0 | 20.0 | 68.0 | 18.741 | O | 1 |
| A870 | 11.0 | 21.0 | 68.0 | 18.385 | O | 1 |
| A871 | 10.0 | 22.0 | 68.0 | 18.028 | O | 1 |
| A872 | 9.0 | 23.0 | 68.0 | 17.671 | O | 1 |
| A873 | 8.0 | 24.0 | 68.0 | 17.314 | O | 1 |
| A874 | 7.0 | 25.0 | 68.0 | 16.957 | O | 1 |
| A875 | 6.0 | 26.0 | 68.0 | 16.601 | O | 1 |
| A876 | 5.0 | 27.0 | 68.0 | 16.244 | O | 1 |
| A877 | 4.0 | 28.0 | 68.0 | 15.887 | O | 1 |
| A878 | 3.0 | 29.0 | 68.0 | 15.482 | O | 1 |
| A879 | 2.0 | 30.0 | 68.0 | 15.064 | O | 1 |
| A880 | 1.0 | 31.0 | 68.0 | 14.646 | O | 1 |
| A881 | 0.0 | 32.0 | 68.0 | 14.228 | O | 1 |
| A882 | 13.0 | 17.0 | 70.0 | 19.210 | X | 1 |
| A883 | 12.5 | 17.5 | 70.0 | 19.032 | X | 1 |
| A884 | 12.4 | 17.6 | 70.0 | 18.996 | O | 1 |
| A885 | 12.0 | 18.0 | 70.0 | 18.853 | O | 1 |
| A886 | 11.0 | 19.0 | 70.0 | 18.497 | O | 1 |
| A887 | 10.0 | 20.0 | 70.0 | 18.140 | O | 1 |
| A888 | 9.0 | 21.0 | 70.0 | 17.783 | O | 1 |
| A889 | 8.0 | 22.0 | 70.0 | 17.426 | O | 1 |
| A890 | 7.0 | 23.0 | 70.0 | 17.069 | O | 1 |
| A891 | 6.0 | 24.0 | 70.0 | 16.712 | O | 1 |
| A892 | 5.0 | 25.0 | 70.0 | 16.356 | O | 1 |
| A893 | 4.0 | 26.0 | 70.0 | 15.999 | O | 1 |
| A894 | 3.0 | 27.0 | 70.0 | 15.608 | O | 1 |
| A895 | 2.0 | 28.0 | 70.0 | 15.190 | O | 1 |
| A896 | 1.0 | 29.0 | 70.0 | 14.772 | O | 1 |
| A897 | 0.0 | 30.0 | 70.0 | 14.354 | O | 1 |
| A898 | 13.0 | 15.0 | 72.0 | 19.322 | X | 1 |
| A899 | 12.1 | 15.9 | 72.0 | 19.001 | X | 1 |
| A900 | 12.0 | 16.0 | 72.0 | 18.965 | O | 1 |
| A901 | 11.0 | 17.0 | 72.0 | 18.609 | O | 1 |
| A902 | 10.0 | 18.0 | 72.0 | 18.252 | O | 1 |
| A903 | 9.0 | 19.0 | 72.0 | 17.895 | O | 1 |
| A904 | 8.0 | 20.0 | 72.0 | 17.538 | O | 1 |
| A905 | 7.0 | 21.0 | 72.0 | 17.181 | O | 1 |
| A906 | 6.0 | 22.0 | 72.0 | 16.824 | O | 1 |
| A907 | 5.0 | 23.0 | 72.0 | 16.468 | O | 1 |
| A908 | 4.0 | 24.0 | 72.0 | 16.111 | O | 1 |
| A909 | 3.0 | 25.0 | 72.0 | 15.735 | O | 1 |
| A910 | 2.0 | 26.0 | 72.0 | 15.317 | O | 1 |
| A911 | 1.0 | 27.0 | 72.0 | 14.899 | O | 1 |
| A912 | 0.0 | 28.0 | 72.0 | 14.481 | O | 1 |
| A913 | 12.0 | 14.0 | 74.0 | 19.077 | X | 1 |

[Table 232]

| | | | | | |
|---|---|---|---|---|---|
| A914 | 11.8 | 14.2 | 74.0 | 19.006 | X | 1 |
| A915 | 11.7 | 14.3 | 74.0 | 18.970 | O | 1 |
| A916 | 11.0 | 15.0 | 74.0 | 18.720 | O | 1 |
| A917 | 10.0 | 16.0 | 74.0 | 18.364 | O | 1 |
| A918 | 9.0 | 17.0 | 74.0 | 18.007 | O | 1 |
| A919 | 8.0 | 18.0 | 74.0 | 17.650 | O | 1 |
| A920 | 7.0 | 19.0 | 74.0 | 17.293 | O | 1 |
| A921 | 6.0 | 20.0 | 74.0 | 16.936 | O | 1 |
| A922 | 5.0 | 21.0 | 74.0 | 16.580 | O | 1 |
| A923 | 4.0 | 22.0 | 74.0 | 16.223 | O | 1 |
| A924 | 3.0 | 23.0 | 74.0 | 15.861 | O | 1 |
| A925 | 2.0 | 24.0 | 74.0 | 15.443 | O | 1 |
| A926 | 1.0 | 25.0 | 74.0 | 15.025 | O | 1 |
| A927 | 0.0 | 26.0 | 74.0 | 14.607 | O | 1 |
| A928 | 12.0 | 13.0 | 75.0 | 19.133 | X | 1 |
| A929 | 11.7 | 13.3 | 75.0 | 19.026 | X | 1 |
| A930 | 11.6 | 13.4 | 75.0 | 18.991 | O | 1 |
| A931 | 11.0 | 14.0 | 75.0 | 18.776 | O | 1 |
| A932 | 10.0 | 15.0 | 75.0 | 18.420 | O | 1 |
| A933 | 9.0 | 16.0 | 75.0 | 18.063 | O | 1 |
| A934 | 8.0 | 17.0 | 75.0 | 17.706 | O | 1 |
| A935 | 7.0 | 18.0 | 75.0 | 17.349 | O | 1 |
| A936 | 6.0 | 19.0 | 75.0 | 16.992 | O | 1 |
| A937 | 5.0 | 20.0 | 75.0 | 16.636 | O | 1 |
| A938 | 4.0 | 21.0 | 75.0 | 16.279 | O | 1 |
| A939 | 3.0 | 22.0 | 75.0 | 15.922 | O | 1 |
| A940 | 2.0 | 23.0 | 75.0 | 15.506 | O | 1 |
| A941 | 1.0 | 24.0 | 75.0 | 15.088 | O | 1 |
| A942 | 0.0 | 25.0 | 75.0 | 14.671 | O | 1 |
| A943 | 12.0 | 12.0 | 76.0 | 19.189 | X | 1 |
| A944 | 11.5 | 12.5 | 76.0 | 19.011 | X | 1 |
| A945 | 11.4 | 12.6 | 76.0 | 18.975 | O | 1 |
| A946 | 11.0 | 13.0 | 76.0 | 18.832 | O | 1 |
| A947 | 10.0 | 14.0 | 76.0 | 18.476 | O | 1 |
| A948 | 9.0 | 15.0 | 76.0 | 18.119 | O | 1 |
| A949 | 8.0 | 16.0 | 76.0 | 17.762 | O | 1 |
| A950 | 7.0 | 17.0 | 76.0 | 17.405 | O | 1 |
| A951 | 6.0 | 18.0 | 76.0 | 17.048 | O | 1 |
| A952 | 5.0 | 19.0 | 76.0 | 16.692 | O | 1 |
| A953 | 4.0 | 20.0 | 76.0 | 16.335 | O | 1 |
| A954 | 3.0 | 21.0 | 76.0 | 15.978 | O | 1 |
| A955 | 2.0 | 22.0 | 76.0 | 15.570 | O | 1 |
| A956 | 1.0 | 23.0 | 76.0 | 15.152 | O | 1 |
| A957 | 0.0 | 24.0 | 76.0 | 14.734 | O | 1 |
| A958 | 12.0 | 10.0 | 78.0 | 19.301 | X | 1 |
| A959 | 11.2 | 10.8 | 78.0 | 19.016 | X | 1 |
| A960 | 11.1 | 10.9 | 78.0 | 18.980 | O | 1 |
| A961 | 11.0 | 11.0 | 78.0 | 18.944 | O | 1 |
| A962 | 10.0 | 12.0 | 78.0 | 18.588 | O | 1 |
| A963 | 9.0 | 13.0 | 78.0 | 18.231 | O | 1 |

[Table 233]

| A964 | 8.0 | 14.0 | 78.0 | 17.874 | O | 1 |
|---|---|---|---|---|---|---|
| A965 | 7.0 | 15.0 | 78.0 | 17.517 | O | 1 |
| A966 | 6.0 | 16.0 | 78.0 | 17.160 | O | 1 |
| A967 | 5.0 | 17.0 | 78.0 | 16.804 | O | 1 |
| A968 | 4.0 | 18.0 | 78.0 | 16.447 | O | 1 |
| A969 | 3.0 | 19.0 | 78.0 | 16.090 | O | 1 |
| A970 | 2.0 | 20.0 | 78.0 | 15.696 | O | 1 |
| A971 | 1.0 | 21.0 | 78.0 | 15.278 | O | 1 |
| A972 | 0.0 | 22.0 | 78.0 | 14.860 | O | 1 |
| A973 | 11.0 | 9.0 | 80.0 | 19.056 | X | 1 |
| A974 | 10.9 | 9.1 | 80.0 | 19.021 | X | 1 |
| A975 | 10.8 | 9.2 | 80.0 | 18.985 | O | 1 |
| A976 | 10.0 | 10.0 | 80.0 | 18.700 | O | 1 |
| A977 | 9.0 | 11.0 | 80.0 | 18.343 | O | 1 |
| A978 | 8.0 | 12.0 | 80.0 | 17.986 | O | 1 |
| A979 | 7.0 | 13.0 | 80.0 | 17.629 | O | 1 |
| A980 | 6.0 | 14.0 | 80.0 | 17.272 | O | 1 |
| A981 | 5.0 | 15.0 | 80.0 | 16.915 | O | 1 |
| A982 | 4.0 | 16.0 | 80.0 | 16.559 | O | 1 |
| A983 | 3.0 | 17.0 | 80.0 | 16.202 | O | 1 |
| A984 | 2.0 | 18.0 | 80.0 | 15.822 | O | 1 |
| A985 | 1.0 | 19.0 | 80.0 | 15.405 | O | 1 |
| A986 | 0.0 | 20.0 | 80.0 | 14.987 | O | 1 |
| A987 | 11.0 | 7.0 | 82.0 | 19.168 | X | 1 |
| A988 | 10.6 | 7.4 | 82.0 | 19.026 | X | 1 |
| A989 | 10.5 | 7.5 | 82.0 | 18.990 | O | 1 |
| A990 | 10.0 | 8.0 | 82.0 | 18.812 | O | 1 |
| A991 | 9.0 | 9.0 | 82.0 | 18.455 | O | 1 |
| A992 | 8.0 | 10.0 | 82.0 | 18.098 | O | 1 |
| A993 | 7.0 | 11.0 | 82.0 | 17.741 | O | 1 |
| A994 | 6.0 | 12.0 | 82.0 | 17.384 | O | 1 |
| A995 | 5.0 | 13.0 | 82.0 | 17.027 | O | 1 |
| A996 | 4.0 | 14.0 | 82.0 | 16.671 | O | 1 |
| A997 | 3.0 | 15.0 | 82.0 | 16.314 | O | 1 |
| A998 | 2.0 | 16.0 | 82.0 | 15.949 | O | 1 |
| A999 | 1.0 | 17.0 | 82.0 | 15.531 | O | 1 |
| A1000 | 0.0 | 18.0 | 82.0 | 15.113 | O | 1 |
| A1001 | 11.0 | 5.0 | 84.0 | 19.280 | X | 1 |
| A1002 | 10.3 | 5.7 | 84.0 | 19.031 | X | 1 |
| A1003 | 10.2 | 5.8 | 84.0 | 18.995 | O | 1 |
| A1004 | 10.0 | 6.0 | 84.0 | 18.923 | O | 1 |
| A1005 | 9.0 | 7.0 | 84.0 | 18.567 | O | 1 |
| A1006 | 8.0 | 8.0 | 84.0 | 18.210 | O | 1 |
| A1007 | 7.0 | 9.0 | 84.0 | 17.853 | O | 1 |
| A1008 | 6.0 | 10.0 | 84.0 | 17.496 | O | 1 |
| A1009 | 5.0 | 11.0 | 84.0 | 17.139 | O | 1 |
| A1010 | 4.0 | 12.0 | 84.0 | 16.783 | O | 1 |
| A1011 | 3.0 | 13.0 | 84.0 | 16.426 | O | 1 |
| A1012 | 2.0 | 14.0 | 84.0 | 16.069 | O | 1 |
| A1013 | 1.0 | 15.0 | 84.0 | 15.657 | O | 1 |

[Table 234]

| A1014 | 0.0 | 16.0 | 84.0 | 15.240 | O | 1 |
|---|---|---|---|---|---|---|
| A1015 | 11.0 | 4.0 | 85.0 | 19.336 | X | 1 |
| A1016 | 10.1 | 4.9 | 85.0 | 19.015 | X | 1 |
| A1017 | 10.0 | 5.0 | 85.0 | 18.979 | O | 1 |
| A1018 | 9.0 | 6.0 | 85.0 | 18.623 | O | 1 |
| A1019 | 8.0 | 7.0 | 85.0 | 18.266 | O | 1 |
| A1020 | 7.0 | 8.0 | 85.0 | 17.909 | O | 1 |
| A1021 | 6.0 | 9.0 | 85.0 | 17.552 | O | 1 |
| A1022 | 5.0 | 10.0 | 85.0 | 17.195 | O | 1 |
| A1023 | 4.0 | 11.0 | 85.0 | 16.839 | O | 1 |
| A1024 | 3.0 | 12.0 | 85.0 | 16.482 | O | 1 |
| A1025 | 2.0 | 13.0 | 85.0 | 16.125 | O | 1 |
| A1026 | 1.0 | 14.0 | 85.0 | 15.721 | O | 1 |
| A1027 | 0.0 | 15.0 | 85.0 | 15.303 | O | 1 |
| A1028 | 10.0 | 4.0 | 86.0 | 19.035 | X | 1 |
| A1029 | 9.9 | 4.1 | 86.0 | 19.000 | **X** | 1 |
| A1030 | 9.8 | 4.2 | 86.0 | 18.964 | O | 1 |
| A1031 | 9.0 | 5.0 | 86.0 | 18.679 | O | 1 |
| A1032 | 8.0 | 6.0 | 86.0 | 18.322 | O | 1 |
| A1033 | 7.0 | 7.0 | 86.0 | 17.965 | O | 1 |
| A1034 | 6.0 | 8.0 | 86.0 | 17.608 | O | 1 |
| A1035 | 5.0 | 9.0 | 86.0 | 17.251 | O | 1 |
| A1036 | 4.0 | 10.0 | 86.0 | 16.895 | O | 1 |
| A1037 | 3.0 | 11.0 | 86.0 | 16.538 | O | 1 |
| A1038 | 2.0 | 12.0 | 86.0 | 16.181 | O | 1 |
| A1039 | 1.0 | 13.0 | 86.0 | 15.784 | O | 1 |
| A1040 | 0.0 | 14.0 | 86.0 | 15.366 | O | 1 |
| A1041 | 10.0 | 2.0 | 88.0 | 19.147 | X | 1 |
| A1042 | 9.6 | 2.4 | 88.0 | 19.005 | X | 1 |
| A1043 | 9.5 | 2.5 | 88.0 | 18.969 | O | 1 |
| A1044 | 9.0 | 3.0 | 88.0 | 18.791 | O | 1 |
| A1045 | 8.0 | 4.0 | 88.0 | 18.434 | O | 1 |
| A1046 | 7.0 | 5.0 | 88.0 | 18.077 | O | 1 |
| A1047 | 6.0 | 6.0 | 88.0 | 17.720 | O | 1 |
| A1048 | 5.0 | 7.0 | 88.0 | 17.363 | O | 1 |
| A1049 | 4.0 | 8.0 | 88.0 | 17.007 | O | 1 |
| A1050 | 3.0 | 9.0 | 88.0 | 16.650 | O | 1 |
| A1051 | 2.0 | 10.0 | 88.0 | 16.293 | O | 1 |
| A1052 | 1.0 | 11.0 | 88.0 | 15.910 | O | 1 |
| A1053 | 0.0 | 12.0 | 88.0 | 15.492 | O | 1 |
| A1054 | 10.0 | 0.0 | 90.0 | 19.259 | X | 1 |
| A1055 | 9.3 | 0.7 | 90.0 | 19.010 | X | 1 |
| A1056 | 9.2 | 0.8 | 90.0 | 18.974 | O | 1 |
| A1057 | 9.0 | 1.0 | 90.0 | 18.903 | O | 1 |
| A1058 | 8.0 | 2.0 | 90.0 | 18.546 | O | 1 |
| A1059 | 7.0 | 3.0 | 90.0 | 18.189 | O | 1 |
| A1060 | 6.0 | 4.0 | 90.0 | 17.832 | O | 1 |
| A1061 | 5.0 | 5.0 | 90.0 | 17.475 | O | 1 |
| A1062 | 4.0 | 6.0 | 90.0 | 17.119 | O | 1 |
| A1063 | 3.0 | 7.0 | 90.0 | 16.762 | O | 1 |
| A1064 | 2.0 | 8.0 | 90.0 | 16.405 | O | 1 |
| A1065 | 1.0 | 9.0 | 90.0 | 16.037 | O | 1 |
| A1066 | 0.0 | 10.0 | 90.0 | 15.619 | O | 1 |

Tables 235 to 257 show the composition, combustion heat amount, and GWP of the working medium of a three-component system of propane, HFO-1132(E), and HFO-1234yf.

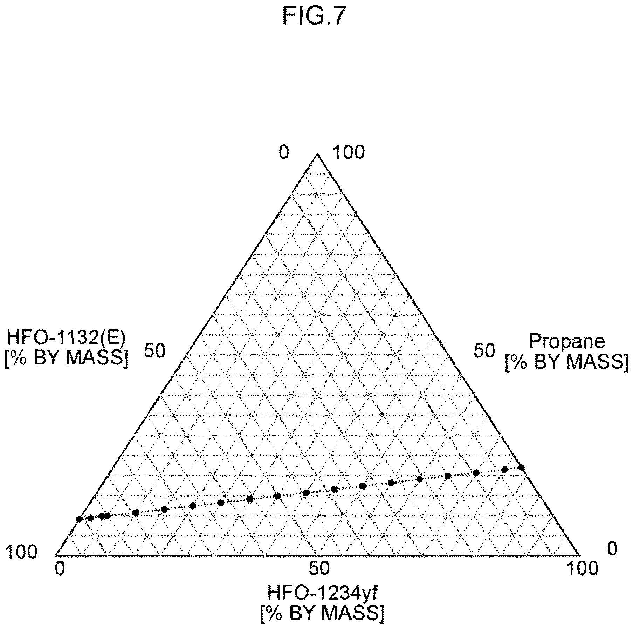

Fig. 7 shows a triangular diagram of a three-component system of propane, HFO-1132(E), and HFO-1234yf. Fig. 7 shows a straight line connecting (9.1, 90.9, 0.0) and (22.0, 0.0, 78.0) by (propane, HFO-1132(E), HFO-1234yf).

A region including this straight line and having a low propane concentration indicates a region where the combustion heat amount for the three-component system of propane, HFO-1132(E), and HFO-1234yf is less than 19.000 MJ/kg, and a region having a higher propane concentration than the straight line indicates a region where the combustion heat amount for the three-component system of propane, HFO-1132(E), and HFO-1234yf is 19.000 MJ/kg or more.

The straight line in Fig. 7 is also expressed as follows:

in the case of (Propane, HFO-1132(E), HFO-1234yf) = (X, Y, Z),
(X, Y, Z) = (-0.141904Y + 22.0, Y, 78.0 - 0.858096Y)
※ Y ≤ 90.9.

[Table 235]

| Case | propane | HFO-1132(E) | HFO-1234yf | Heat of Combustion | Evaluation | GWP |
|------|---------|-------------|------------|--------------------|------------|-----|
| A1067 | 10.0 | 88.0 | 2.0 | 19.159 | X | 1 |
| A1068 | 9.5 | 88.5 | 2.0 | 19.009 | X | 1 |
| A1069 | 9.4 | 88.6 | 2.0 | 18.979 | O | 1 |
| A1070 | 9.0 | 89.0 | 2.0 | 18.859 | O | 1 |
| A1071 | 8.0 | 90.0 | 2.0 | 18.558 | O | 1 |
| A1072 | 7.0 | 91.0 | 2.0 | 18.257 | O | 1 |
| A1073 | 6.0 | 92.0 | 2.0 | 17.956 | O | 1 |
| A1074 | 5.0 | 93.0 | 2.0 | 17.655 | O | 1 |
| A1075 | 4.0 | 94.0 | 2.0 | 17.354 | O | 1 |
| A1076 | 3.0 | 95.0 | 2.0 | 17.054 | O | 1 |
| A1077 | 2.0 | 96.0 | 2.0 | 16.753 | O | 1 |
| A1078 | 1.0 | 97.0 | 2.0 | 16.452 | O | 1 |
| A1079 | 0.0 | 98.0 | 2.0 | 16.141 | O | 1 |
| A1080 | 10.0 | 86.0 | 4.0 | 19.059 | X | 1 |
| A1081 | 9.9 | 86.1 | 4.0 | 19.029 | X | 1 |
| A1082 | 9.8 | 86.2 | 4.0 | 18.999 | O | 1 |
| A1083 | 9.0 | 87.0 | 4.0 | 18.759 | O | 1 |
| A1084 | 8.0 | 88.0 | 4.0 | 18.458 | O | 1 |
| A1085 | 7.0 | 89.0 | 4.0 | 18.157 | O | 1 |
| A1086 | 6.0 | 90.0 | 4.0 | 17.856 | O | 1 |
| A1087 | 5.0 | 91.0 | 4.0 | 17.555 | O | 1 |
| A1088 | 4.0 | 92.0 | 4.0 | 17.254 | O | 1 |
| A1089 | 3.0 | 93.0 | 4.0 | 16.954 | O | 1 |
| A1090 | 2.0 | 94.0 | 4.0 | 16.653 | O | 1 |
| A1091 | 1.0 | 95.0 | 4.0 | 16.352 | O | 1 |
| A1092 | 0.0 | 96.0 | 4.0 | 16.030 | O | 1 |
| A1093 | 10.0 | 85.0 | 5.0 | 19.009 | X | 1 |
| A1094 | 9.9 | 85.1 | 5.0 | 18.979 | O | 1 |
| A1095 | 9.0 | 86.0 | 5.0 | 18.709 | O | 1 |
| A1096 | 8.0 | 87.0 | 5.0 | 18.408 | O | 1 |
| A1097 | 7.0 | 88.0 | 5.0 | 18.107 | O | 1 |
| A1098 | 6.0 | 89.0 | 5.0 | 17.806 | O | 1 |
| A1099 | 5.0 | 90.0 | 5.0 | 17.505 | O | 1 |
| A1100 | 4.0 | 91.0 | 5.0 | 17.204 | O | 1 |
| A1101 | 3.0 | 92.0 | 5.0 | 16.904 | O | 1 |
| A1102 | 2.0 | 93.0 | 5.0 | 16.603 | O | 1 |
| A1103 | 1.0 | 94.0 | 5.0 | 16.302 | O | 1 |
| A1104 | 0.0 | 95.0 | 5.0 | 15.975 | O | 1 |
| A1105 | 11.0 | 82.0 | 7.0 | 19.210 | X | 1 |
| A1106 | 10.3 | 82.7 | 7.0 | 19.000 | X | 1 |
| A1107 | 10.2 | 82.8 | 7.0 | 18.970 | O | 1 |
| A1108 | 10.0 | 83.0 | 7.0 | 18.909 | O | 1 |
| A1109 | 9.0 | 84.0 | 7.0 | 18.609 | O | 1 |
| A1110 | 8.0 | 85.0 | 7.0 | 18.308 | O | 1 |
| A1111 | 7.0 | 86.0 | 7.0 | 18.007 | O | 1 |
| A1112 | 6.0 | 87.0 | 7.0 | 17.706 | O | 1 |
| A1113 | 5.0 | 88.0 | 7.0 | 17.405 | O | 1 |
| A1114 | 4.0 | 89.0 | 7.0 | 17.104 | O | 1 |
| A1115 | 3.0 | 90.0 | 7.0 | 16.804 | O | 1 |
| A1116 | 2.0 | 91.0 | 7.0 | 16.503 | O | 1 |

[Table 236]

| | | | | | | |
|---|---|---|---|---|---|---|
| A1117 | 1.0 | 92.0 | 7.0 | 16.202 | O | 1 |
| A1118 | 0.0 | 93.0 | 7.0 | 15.865 | O | 1 |
| A1119 | 11.0 | 80.0 | 9.0 | 19.110 | X | 1 |
| A1120 | 10.7 | 80.3 | 9.0 | 19.020 | X | 1 |
| A1121 | 10.6 | 80.4 | 9.0 | 18.990 | O | 1 |
| A1122 | 10.0 | 81.0 | 9.0 | 18.809 | O | 1 |
| A1123 | 9.0 | 82.0 | 9.0 | 18.509 | O | 1 |
| A1124 | 8.0 | 83.0 | 9.0 | 18.208 | O | 1 |
| A1125 | 7.0 | 84.0 | 9.0 | 17.907 | O | 1 |
| A1126 | 6.0 | 85.0 | 9.0 | 17.606 | O | 1 |
| A1127 | 5.0 | 86.0 | 9.0 | 17.305 | O | 1 |
| A1128 | 4.0 | 87.0 | 9.0 | 17.005 | O | 1 |
| A1129 | 3.0 | 88.0 | 9.0 | 16.704 | O | 1 |
| A1130 | 2.0 | 89.0 | 9.0 | 16.403 | O | 1 |
| A1131 | 1.0 | 90.0 | 9.0 | 16.102 | O | 1 |
| A1132 | 0.0 | 91.0 | 9.0 | 15.754 | O | 1 |
| A1133 | 11.0 | 79.0 | 10.0 | 19.060 | X | 1 |
| A1134 | 10.8 | 79.2 | 10.0 | 19.000 | X | 1 |
| A1135 | 10.7 | 79.3 | 10.0 | 18.970 | O | 1 |
| A1136 | 10.0 | 80.0 | 10.0 | 18.760 | O | 1 |
| A1137 | 9.0 | 81.0 | 10.0 | 18.459 | O | 1 |
| A1138 | 8.0 | 82.0 | 10.0 | 18.158 | O | 1 |
| A1139 | 7.0 | 83.0 | 10.0 | 17.857 | O | 1 |
| A1140 | 6.0 | 84.0 | 10.0 | 17.556 | O | 1 |
| A1141 | 5.0 | 85.0 | 10.0 | 17.255 | O | 1 |
| A1142 | 4.0 | 86.0 | 10.0 | 16.955 | O | 1 |
| A1143 | 3.0 | 87.0 | 10.0 | 16.654 | O | 1 |
| A1144 | 2.0 | 88.0 | 10.0 | 16.353 | O | 1 |
| A1145 | 1.0 | 89.0 | 10.0 | 16.052 | O | 1 |
| A1146 | 0.0 | 90.0 | 10.0 | 15.699 | O | 1 |
| A1147 | 12.0 | 76.0 | 12.0 | 19.261 | X | 1 |
| A1148 | 11.1 | 76.9 | 12.0 | 18.990 | O | 1 |
| A1149 | 11.0 | 77.0 | 12.0 | 18.960 | O | 1 |
| A1150 | 10.0 | 78.0 | 12.0 | 18.660 | O | 1 |
| A1151 | 9.0 | 79.0 | 12.0 | 18.359 | O | 1 |
| A1152 | 8.0 | 80.0 | 12.0 | 18.058 | O | 1 |
| A1153 | 7.0 | 81.0 | 12.0 | 17.757 | O | 1 |
| A1154 | 6.0 | 82.0 | 12.0 | 17.456 | O | 1 |
| A1155 | 5.0 | 83.0 | 12.0 | 17.155 | O | 1 |
| A1156 | 4.0 | 84.0 | 12.0 | 16.855 | O | 1 |
| A1157 | 3.0 | 85.0 | 12.0 | 16.554 | O | 1 |
| A1158 | 2.0 | 86.0 | 12.0 | 16.253 | O | 1 |
| A1159 | 1.0 | 87.0 | 12.0 | 15.943 | O | 1 |
| A1160 | 0.0 | 88.0 | 12.0 | 15.589 | O | 1 |
| A1161 | 13.0 | 72.0 | 15.0 | 19.412 | X | 1 |
| A1162 | 12.0 | 73.0 | 15.0 | 19.111 | X | 1 |
| A1163 | 11.7 | 73.3 | 15.0 | 19.021 | X | 1 |
| A1164 | 11.6 | 73.4 | 15.0 | 18.991 | O | 1 |
| A1165 | 11.0 | 74.0 | 15.0 | 18.810 | O | 1 |
| A1166 | 10.0 | 75.0 | 15.0 | 18.510 | O | 1 |

[Table 237]

| | | | | | | |
|---|---|---|---|---|---|---|
| A1167 | 9.0 | 76.0 | 15.0 | 18.209 | O | 1 |
| A1168 | 8.0 | 77.0 | 15.0 | 17.908 | O | 1 |
| A1169 | 7.0 | 78.0 | 15.0 | 17.607 | O | 1 |
| A1170 | 6.0 | 79.0 | 15.0 | 17.306 | O | 1 |
| A1171 | 5.0 | 80.0 | 15.0 | 17.005 | O | 1 |
| A1172 | 4.0 | 81.0 | 15.0 | 16.705 | O | 1 |
| A1173 | 3.0 | 82.0 | 15.0 | 16.404 | O | 1 |
| A1174 | 2.0 | 83.0 | 15.0 | 16.103 | O | 1 |
| A1175 | 1.0 | 84.0 | 15.0 | 15.778 | O | 1 |
| A1176 | 0.0 | 85.0 | 15.0 | 15.423 | O | 1 |
| A1177 | 13.0 | 69.0 | 18.0 | 19.262 | X | 1 |
| A1178 | 12.2 | 69.8 | 18.0 | 19.021 | X | 1 |
| A1179 | 12.1 | 69.9 | 18.0 | 18.991 | O | 1 |
| A1180 | 12.0 | 70.0 | 18.0 | 18.961 | O | 1 |
| A1181 | 11.0 | 71.0 | 18.0 | 18.660 | O | 1 |
| A1182 | 10.0 | 72.0 | 18.0 | 18.360 | O | 1 |
| A1183 | 9.0 | 73.0 | 18.0 | 18.059 | O | 1 |
| A1184 | 8.0 | 74.0 | 18.0 | 17.758 | O | 1 |
| A1185 | 7.0 | 75.0 | 18.0 | 17.457 | O | 1 |
| A1186 | 6.0 | 76.0 | 18.0 | 17.156 | O | 1 |
| A1187 | 5.0 | 77.0 | 18.0 | 16.855 | O | 1 |
| A1188 | 4.0 | 78.0 | 18.0 | 16.555 | O | 1 |
| A1189 | 3.0 | 79.0 | 18.0 | 16.254 | O | 1 |
| A1190 | 2.0 | 80.0 | 18.0 | 15.953 | O | 1 |
| A1191 | 1.0 | 81.0 | 18.0 | 15.612 | O | 1 |
| A1192 | 0.0 | 82.0 | 18.0 | 15.258 | O | 1 |
| A1193 | 13.0 | 67.0 | 20.0 | 19.162 | X | 1 |
| A1194 | 12.5 | 67.5 | 20.0 | 19.012 | X | 1 |
| A1195 | 12.4 | 67.6 | 20.0 | 18.982 | O | 1 |
| A1196 | 12.0 | 68.0 | 20.0 | 18.861 | O | 1 |
| A1197 | 11.0 | 69.0 | 20.0 | 18.560 | O | 1 |
| A1198 | 10.0 | 70.0 | 20.0 | 18.260 | O | 1 |
| A1199 | 9.0 | 71.0 | 20.0 | 17.959 | O | 1 |
| A1200 | 8.0 | 72.0 | 20.0 | 17.658 | O | 1 |
| A1201 | 7.0 | 73.0 | 20.0 | 17.357 | O | 1 |
| A1202 | 6.0 | 74.0 | 20.0 | 17.056 | O | 1 |
| A1203 | 5.0 | 75.0 | 20.0 | 16.755 | O | 1 |
| A1204 | 4.0 | 76.0 | 20.0 | 16.455 | O | 1 |
| A1205 | 3.0 | 77.0 | 20.0 | 16.154 | O | 1 |
| A1206 | 2.0 | 78.0 | 20.0 | 15.853 | O | 1 |
| A1207 | 1.0 | 79.0 | 20.0 | 15.502 | O | 1 |
| A1208 | 0.0 | 80.0 | 20.0 | 15.147 | O | 1 |
| A1209 | 14.0 | 64.0 | 22.0 | 19.363 | X | 1 |
| A1210 | 13.0 | 65.0 | 22.0 | 19.062 | X | 1 |
| A1211 | 12.9 | 65.1 | 22.0 | 19.032 | X | 1 |
| A1212 | 12.0 | 66.0 | 22.0 | 18.761 | O | 1 |
| A1213 | 11.0 | 67.0 | 22.0 | 18.460 | O | 1 |
| A1214 | 10.0 | 68.0 | 22.0 | 18.160 | O | 1 |
| A1215 | 9.0 | 69.0 | 22.0 | 17.859 | O | 1 |
| A1216 | 8.0 | 70.0 | 22.0 | 17.558 | O | 1 |

[Table 238]

| A1217 | 7.0 | 71.0 | 22.0 | 17.257 | O | 1 |
|---|---|---|---|---|---|---|
| A1218 | 6.0 | 72.0 | 22.0 | 16.956 | O | 1 |
| A1219 | 5.0 | 73.0 | 22.0 | 16.655 | O | 1 |
| A1220 | 4.0 | 74.0 | 22.0 | 16.355 | O | 1 |
| A1221 | 3.0 | 75.0 | 22.0 | 16.054 | O | 1 |
| A1222 | 2.0 | 76.0 | 22.0 | 15.746 | O | 1 |
| A1223 | 1.0 | 77.0 | 22.0 | 15.391 | O | 1 |
| A1224 | 0.0 | 78.0 | 22.0 | 15.037 | O | 1 |
| A1225 | 13.0 | 64.0 | 23.0 | 19.012 | X | 1 |
| A1226 | 12.9 | 64.1 | 23.0 | 18.982 | O | 1 |
| A1227 | 12.0 | 65.0 | 23.0 | 18.711 | O | 1 |
| A1228 | 11.0 | 66.0 | 23.0 | 18.410 | O | 1 |
| A1229 | 10.0 | 67.0 | 23.0 | 18.110 | O | 1 |
| A1230 | 9.0 | 68.0 | 23.0 | 17.809 | O | 1 |
| A1231 | 8.0 | 69.0 | 23.0 | 17.508 | O | 1 |
| A1232 | 7.0 | 70.0 | 23.0 | 17.207 | O | 1 |
| A1233 | 6.0 | 71.0 | 23.0 | 16.906 | O | 1 |
| A1234 | 5.0 | 72.0 | 23.0 | 16.605 | O | 1 |
| A1235 | 4.0 | 73.0 | 23.0 | 16.305 | O | 1 |
| A1236 | 3.0 | 74.0 | 23.0 | 16.004 | O | 1 |
| A1237 | 2.0 | 75.0 | 23.0 | 15.691 | O | 1 |
| A1238 | 1.0 | 76.0 | 23.0 | 15.336 | O | 1 |
| A1239 | 0.0 | 77.0 | 23.0 | 14.982 | O | 1 |
| A1240 | 14.0 | 61.0 | 25.0 | 19.213 | X | 1 |
| A1241 | 13.3 | 61.7 | 25.0 | 19.002 | X | 1 |
| A1242 | 13.2 | 61.8 | 25.0 | 18.972 | O | 1 |
| A1243 | 13.0 | 62.0 | 25.0 | 18.912 | O | 1 |
| A1244 | 12.0 | 63.0 | 25.0 | 18.611 | O | 1 |
| A1245 | 11.0 | 64.0 | 25.0 | 18.311 | O | 1 |
| A1246 | 10.0 | 65.0 | 25.0 | 18.010 | O | 1 |
| A1247 | 9.0 | 66.0 | 25.0 | 17.709 | O | 1 |
| A1248 | 8.0 | 67.0 | 25.0 | 17.408 | O | 1 |
| A1249 | 7.0 | 68.0 | 25.0 | 17.107 | O | 1 |
| A1250 | 6.0 | 69.0 | 25.0 | 16.806 | O | 1 |
| A1251 | 5.0 | 70.0 | 25.0 | 16.506 | O | 1 |
| A1252 | 4.0 | 71.0 | 25.0 | 16.205 | O | 1 |
| A1253 | 3.0 | 72.0 | 25.0 | 15.904 | O | 1 |
| A1254 | 2.0 | 73.0 | 25.0 | 15.581 | O | 1 |
| A1255 | 1.0 | 74.0 | 25.0 | 15.226 | O | 1 |
| A1256 | 0.0 | 75.0 | 25.0 | 14.871 | O | 1 |
| A1257 | 14.0 | 60.0 | 26.0 | 19.163 | X | 1 |
| A1258 | 13.3 | 60.7 | 26.0 | 18.952 | O | 1 |
| A1259 | 13.2 | 60.8 | 26.0 | 18.922 | O | 1 |
| A1260 | 13.0 | 61.0 | 26.0 | 18.862 | O | 1 |
| A1261 | 12.0 | 62.0 | 26.0 | 18.561 | O | 1 |
| A1262 | 11.0 | 63.0 | 26.0 | 18.261 | O | 1 |
| A1263 | 10.0 | 64.0 | 26.0 | 17.960 | O | 1 |
| A1264 | 9.0 | 65.0 | 26.0 | 17.659 | O | 1 |
| A1265 | 8.0 | 66.0 | 26.0 | 17.358 | O | 1 |
| A1266 | 7.0 | 67.0 | 26.0 | 17.057 | O | 1 |

[Table 239]

| A1267 | 6.0 | 68.0 | 26.0 | 16.756 | O | 1 |
|---|---|---|---|---|---|---|
| A1268 | 5.0 | 69.0 | 26.0 | 16.456 | O | 1 |
| A1269 | 4.0 | 70.0 | 26.0 | 16.155 | O | 1 |
| A1270 | 3.0 | 71.0 | 26.0 | 15.854 | O | 1 |
| A1271 | 2.0 | 72.0 | 26.0 | 15.525 | O | 1 |
| A1272 | 1.0 | 73.0 | 26.0 | 15.171 | O | 1 |
| A1273 | 0.0 | 74.0 | 26.0 | 14.816 | O | 1 |
| A1274 | 14.0 | 58.0 | 28.0 | 19.063 | X | 1 |
| A1275 | 13.8 | 58.2 | 28.0 | 19.003 | X | 1 |
| A1276 | 13.7 | 58.3 | 28.0 | 18.973 | O | 1 |
| A1277 | 13.0 | 59.0 | 28.0 | 18.762 | O | 1 |
| A1278 | 12.0 | 60.0 | 28.0 | 18.461 | O | 1 |
| A1279 | 11.0 | 61.0 | 28.0 | 18.161 | O | 1 |
| A1280 | 10.0 | 62.0 | 28.0 | 17.860 | O | 1 |
| A1281 | 9.0 | 63.0 | 28.0 | 17.559 | O | 1 |
| A1282 | 8.0 | 64.0 | 28.0 | 17.258 | O | 1 |
| A1283 | 7.0 | 65.0 | 28.0 | 16.957 | O | 1 |
| A1284 | 6.0 | 66.0 | 28.0 | 16.656 | O | 1 |
| A1285 | 5.0 | 67.0 | 28.0 | 16.356 | O | 1 |
| A1286 | 4.0 | 68.0 | 28.0 | 16.055 | O | 1 |
| A1287 | 3.0 | 69.0 | 28.0 | 15.754 | O | 1 |
| A1288 | 2.0 | 70.0 | 28.0 | 15.415 | O | 1 |
| A1289 | 1.0 | 71.0 | 28.0 | 15.060 | O | 1 |
| A1290 | 0.0 | 72.0 | 28.0 | 14.706 | O | 1 |
| A1291 | 15.0 | 56.0 | 29.0 | 19.314 | X | 1 |
| A1292 | 14.0 | 57.0 | 29.0 | 19.013 | X | 1 |
| A1293 | 13.9 | 57.1 | 29.0 | 18.983 | O | 1 |
| A1294 | 13.0 | 58.0 | 29.0 | 18.712 | O | 1 |
| A1295 | 12.0 | 59.0 | 29.0 | 18.411 | O | 1 |
| A1296 | 11.0 | 60.0 | 29.0 | 18.111 | O | 1 |
| A1297 | 10.0 | 61.0 | 29.0 | 17.810 | O | 1 |
| A1298 | 9.0 | 62.0 | 29.0 | 17.509 | O | 1 |
| A1299 | 8.0 | 63.0 | 29.0 | 17.208 | O | 1 |
| A1300 | 7.0 | 64.0 | 29.0 | 16.907 | O | 1 |
| A1301 | 6.0 | 65.0 | 29.0 | 16.606 | O | 1 |
| A1302 | 5.0 | 66.0 | 29.0 | 16.306 | O | 1 |
| A1303 | 4.0 | 67.0 | 29.0 | 16.005 | O | 1 |
| A1304 | 3.0 | 68.0 | 29.0 | 15.704 | O | 1 |
| A1305 | 2.0 | 69.0 | 29.0 | 15.360 | O | 1 |
| A1306 | 1.0 | 70.0 | 29.0 | 15.005 | O | 1 |
| A1307 | 0.0 | 71.0 | 29.0 | 14.650 | O | 1 |
| A1308 | 15.0 | 55.0 | 30.0 | 19.264 | X | 1 |
| A1309 | 14.2 | 55.8 | 30.0 | 19.023 | X | 1 |
| A1310 | 14.1 | 55.9 | 30.0 | 18.993 | O | 1 |
| A1311 | 14.0 | 56.0 | 30.0 | 18.963 | O | 1 |
| A1312 | 13.0 | 57.0 | 30.0 | 18.662 | O | 1 |
| A1313 | 12.0 | 58.0 | 30.0 | 18.361 | O | 1 |
| A1314 | 11.0 | 59.0 | 30.0 | 18.061 | O | 1 |
| A1315 | 10.0 | 60.0 | 30.0 | 17.760 | O | 1 |
| A1316 | 9.0 | 61.0 | 30.0 | 17.459 | O | 1 |

[Table 240]

| A1317 | 8.0 | 62.0 | 30.0 | 17.158 | O | 1 |
|---|---|---|---|---|---|---|
| A1318 | 7.0 | 63.0 | 30.0 | 16.857 | O | 1 |
| A1319 | 6.0 | 64.0 | 30.0 | 16.556 | O | 1 |
| A1320 | 5.0 | 65.0 | 30.0 | 16.256 | O | 1 |
| A1321 | 4.0 | 66.0 | 30.0 | 15.955 | O | 1 |
| A1322 | 3.0 | 67.0 | 30.0 | 15.654 | O | 1 |
| A1323 | 2.0 | 68.0 | 30.0 | 15.305 | O | 1 |
| A1324 | 1.0 | 69.0 | 30.0 | 14.950 | O | 1 |
| A1325 | 0.0 | 70.0 | 30.0 | 14.595 | O | 1 |
| A1326 | 15.0 | 54.0 | 31.0 | 19.214 | X | 1 |
| A1327 | 14.3 | 54.7 | 31.0 | 19.003 | X | 1 |
| A1328 | 14.2 | 54.8 | 31.0 | 18.973 | O | 1 |
| A1329 | 14.0 | 55.0 | 31.0 | 18.913 | O | 1 |
| A1330 | 13.0 | 56.0 | 31.0 | 18.612 | O | 1 |
| A1331 | 12.0 | 57.0 | 31.0 | 18.311 | O | 1 |
| A1332 | 11.0 | 58.0 | 31.0 | 18.011 | O | 1 |
| A1333 | 10.0 | 59.0 | 31.0 | 17.710 | O | 1 |
| A1334 | 9.0 | 60.0 | 31.0 | 17.409 | O | 1 |
| A1335 | 8.0 | 61.0 | 31.0 | 17.108 | O | 1 |
| A1336 | 7.0 | 62.0 | 31.0 | 16.807 | O | 1 |
| A1337 | 6.0 | 63.0 | 31.0 | 16.506 | O | 1 |
| A1338 | 5.0 | 64.0 | 31.0 | 16.206 | O | 1 |
| A1339 | 4.0 | 65.0 | 31.0 | 15.905 | O | 1 |
| A1340 | 3.0 | 66.0 | 31.0 | 15.604 | O | 1 |
| A1341 | 2.0 | 67.0 | 31.0 | 15.249 | O | 1 |
| A1342 | 1.0 | 68.0 | 31.0 | 14.895 | O | 1 |
| A1343 | 0.0 | 69.0 | 31.0 | 14.540 | O | 1 |
| A1344 | 15.0 | 51.0 | 34.0 | 19.064 | X | 1 |
| A1345 | 14.8 | 51.2 | 34.0 | 19.004 | X | 1 |
| A1346 | 14.7 | 51.3 | 34.0 | 18.974 | O | 1 |
| A1347 | 14.0 | 52.0 | 34.0 | 18.763 | O | 1 |
| A1348 | 13.0 | 53.0 | 34.0 | 18.462 | O | 1 |
| A1349 | 12.0 | 54.0 | 34.0 | 18.161 | O | 1 |
| A1350 | 11.0 | 55.0 | 34.0 | 17.861 | O | 1 |
| A1351 | 10.0 | 56.0 | 34.0 | 17.560 | O | 1 |
| A1352 | 9.0 | 57.0 | 34.0 | 17.259 | O | 1 |
| A1353 | 8.0 | 58.0 | 34.0 | 16.958 | O | 1 |
| A1354 | 7.0 | 59.0 | 34.0 | 16.657 | O | 1 |
| A1355 | 6.0 | 60.0 | 34.0 | 16.356 | O | 1 |
| A1356 | 5.0 | 61.0 | 34.0 | 16.056 | O | 1 |
| A1357 | 4.0 | 62.0 | 34.0 | 15.755 | O | 1 |
| A1358 | 3.0 | 63.0 | 34.0 | 15.439 | O | 1 |
| A1359 | 2.0 | 64.0 | 34.0 | 15.084 | O | 1 |
| A1360 | 1.0 | 65.0 | 34.0 | 14.729 | O | 1 |
| A1361 | 0.0 | 66.0 | 34.0 | 14.374 | O | 1 |
| A1362 | 15.0 | 50.0 | 35.0 | 19.014 | X | 1 |
| A1363 | 14.9 | 50.1 | 35.0 | 18.984 | O | 1 |
| A1364 | 14.0 | 51.0 | 35.0 | 18.713 | O | 1 |
| A1365 | 13.0 | 52.0 | 35.0 | 18.412 | O | 1 |
| A1366 | 12.0 | 53.0 | 35.0 | 18.111 | O | 1 |

[Table 241]

| A1367 | 11.0 | 54.0 | 35.0 | 17.811 | O | 1 |
|---|---|---|---|---|---|---|
| A1368 | 10.0 | 55.0 | 35.0 | 17.510 | O | 1 |
| A1369 | 9.0 | 56.0 | 35.0 | 17.209 | O | 1 |
| A1370 | 8.0 | 57.0 | 35.0 | 16.908 | O | 1 |
| A1371 | 7.0 | 58.0 | 35.0 | 16.607 | O | 1 |
| A1372 | 6.0 | 59.0 | 35.0 | 16.306 | O | 1 |
| A1373 | 5.0 | 60.0 | 35.0 | 16.006 | O | 1 |
| A1374 | 4.0 | 61.0 | 35.0 | 15.705 | O | 1 |
| A1375 | 3.0 | 62.0 | 35.0 | 15.383 | O | 1 |
| A1376 | 2.0 | 63.0 | 35.0 | 15.029 | O | 1 |
| A1377 | 1.0 | 64.0 | 35.0 | 14.674 | O | 1 |
| A1378 | 0.0 | 65.0 | 35.0 | 14.319 | O | 1 |
| A1379 | 16.0 | 48.0 | 36.0 | 19.265 | X | 1 |
| A1380 | 15.2 | 48.8 | 36.0 | 19.024 | X | 1 |
| A1381 | 15.1 | 48.9 | 36.0 | 18.994 | O | 1 |
| A1382 | 15.0 | 49.0 | 36.0 | 18.964 | O | 1 |
| A1383 | 13.0 | 51.0 | 36.0 | 18.362 | O | 1 |
| A1384 | 12.0 | 52.0 | 36.0 | 18.061 | O | 1 |
| A1385 | 11.0 | 53.0 | 36.0 | 17.761 | O | 1 |
| A1386 | 10.0 | 54.0 | 36.0 | 17.460 | O | 1 |
| A1387 | 9.0 | 55.0 | 36.0 | 17.159 | O | 1 |
| A1388 | 8.0 | 56.0 | 36.0 | 16.858 | O | 1 |
| A1389 | 7.0 | 57.0 | 36.0 | 16.557 | O | 1 |
| A1390 | 6.0 | 58.0 | 36.0 | 16.256 | O | 1 |
| A1391 | 5.0 | 59.0 | 36.0 | 15.956 | O | 1 |
| A1392 | 4.0 | 60.0 | 36.0 | 15.655 | O | 1 |
| A1393 | 3.0 | 61.0 | 36.0 | 15.328 | O | 1 |
| A1394 | 2.0 | 62.0 | 36.0 | 14.973 | O | 1 |
| A1395 | 1.0 | 63.0 | 36.0 | 14.619 | O | 1 |
| A1396 | 0.0 | 64.0 | 36.0 | 14.264 | O | 1 |
| A1397 | 16.0 | 47.0 | 37.0 | 19.215 | X | 1 |
| A1398 | 15.3 | 47.7 | 37.0 | 19.004 | X | 1 |
| A1399 | 15.2 | 47.8 | 37.0 | 18.974 | O | 1 |
| A1400 | 15.0 | 48.0 | 37.0 | 18.914 | O | 1 |
| A1401 | 13.0 | 50.0 | 37.0 | 18.312 | O | 1 |
| A1402 | 12.0 | 51.0 | 37.0 | 18.011 | O | 1 |
| A1403 | 11.0 | 52.0 | 37.0 | 17.711 | O | 1 |
| A1404 | 10.0 | 53.0 | 37.0 | 17.410 | O | 1 |
| A1405 | 9.0 | 54.0 | 37.0 | 17.109 | O | 1 |
| A1406 | 8.0 | 55.0 | 37.0 | 16.808 | O | 1 |
| A1407 | 7.0 | 56.0 | 37.0 | 16.507 | O | 1 |
| A1408 | 6.0 | 57.0 | 37.0 | 16.206 | O | 1 |
| A1409 | 5.0 | 58.0 | 37.0 | 15.906 | O | 1 |
| A1410 | 4.0 | 59.0 | 37.0 | 15.605 | O | 1 |
| A1411 | 3.0 | 60.0 | 37.0 | 15.273 | O | 1 |
| A1412 | 2.0 | 61.0 | 37.0 | 14.918 | O | 1 |
| A1413 | 1.0 | 62.0 | 37.0 | 14.564 | O | 1 |
| A1414 | 0.0 | 63.0 | 37.0 | 14.209 | O | 1 |
| A1415 | 16.0 | 45.0 | 39.0 | 19.115 | X | 1 |
| A1416 | 15.7 | 45.3 | 39.0 | 19.025 | X | 1 |

[Table 242]

| A1417 | 15.6 | 45.4 | 39.0 | 18.994 | O | 1 |
|---|---|---|---|---|---|---|
| A1418 | 15.0 | 46.0 | 39.0 | 18.814 | O | 1 |
| A1419 | 14.0 | 47.0 | 39.0 | 18.513 | O | 1 |
| A1420 | 13.0 | 48.0 | 39.0 | 18.212 | O | 1 |
| A1421 | 12.0 | 49.0 | 39.0 | 17.911 | O | 1 |
| A1422 | 11.0 | 50.0 | 39.0 | 17.611 | O | 1 |
| A1423 | 10.0 | 51.0 | 39.0 | 17.310 | O | 1 |
| A1424 | 9.0 | 52.0 | 39.0 | 17.009 | O | 1 |
| A1425 | 8.0 | 53.0 | 39.0 | 16.708 | O | 1 |
| A1426 | 7.0 | 54.0 | 39.0 | 16.407 | O | 1 |
| A1427 | 6.0 | 55.0 | 39.0 | 16.107 | O | 1 |
| A1428 | 5.0 | 56.0 | 39.0 | 15.806 | O | 1 |
| A1429 | 4.0 | 57.0 | 39.0 | 15.505 | O | 1 |
| A1430 | 3.0 | 58.0 | 39.0 | 15.163 | O | 1 |
| A1431 | 2.0 | 59.0 | 39.0 | 14.808 | O | 1 |
| A1432 | 1.0 | 60.0 | 39.0 | 14.453 | O | 1 |
| A1433 | 0.0 | 61.0 | 39.0 | 14.098 | O | 1 |
| A1434 | 16.0 | 44.0 | 40.0 | 19.065 | X | 1 |
| A1435 | 15.8 | 44.2 | 40.0 | 19.005 | X | 1 |
| A1436 | 15.7 | 44.3 | 40.0 | 18.975 | O | 1 |
| A1437 | 15.0 | 45.0 | 40.0 | 18.764 | O | 1 |
| A1438 | 14.0 | 46.0 | 40.0 | 18.463 | O | 1 |
| A1439 | 13.0 | 47.0 | 40.0 | 18.162 | O | 1 |
| A1440 | 12.0 | 48.0 | 40.0 | 17.861 | O | 1 |
| A1441 | 11.0 | 49.0 | 40.0 | 17.561 | O | 1 |
| A1442 | 10.0 | 50.0 | 40.0 | 17.260 | O | 1 |
| A1443 | 9.0 | 51.0 | 40.0 | 16.959 | O | 1 |
| A1444 | 8.0 | 52.0 | 40.0 | 16.658 | O | 1 |
| A1445 | 7.0 | 53.0 | 40.0 | 16.357 | O | 1 |
| A1446 | 6.0 | 54.0 | 40.0 | 16.057 | O | 1 |
| A1447 | 5.0 | 55.0 | 40.0 | 15.756 | O | 1 |
| A1448 | 4.0 | 56.0 | 40.0 | 15.455 | O | 1 |
| A1449 | 3.0 | 57.0 | 40.0 | 15.107 | O | 1 |
| A1450 | 2.0 | 58.0 | 40.0 | 14.753 | O | 1 |
| A1451 | 1.0 | 59.0 | 40.0 | 14.398 | O | 1 |
| A1452 | 0.0 | 60.0 | 40.0 | 14.043 | O | 1 |
| A1453 | 18.0 | 40.0 | 42.0 | 19.567 | X | 1 |
| A1454 | 17.0 | 41.0 | 42.0 | 19.266 | X | 1 |
| A1455 | 16.2 | 41.8 | 42.0 | 19.025 | X | 1 |
| A1456 | 16.1 | 41.9 | 42.0 | 18.995 | O | 1 |
| A1457 | 16.0 | 42.0 | 42.0 | 18.965 | O | 1 |
| A1458 | 15.0 | 43.0 | 42.0 | 18.664 | O | 1 |
| A1459 | 14.0 | 44.0 | 42.0 | 18.363 | O | 1 |
| A1460 | 13.0 | 45.0 | 42.0 | 18.062 | O | 1 |
| A1461 | 12.0 | 46.0 | 42.0 | 17.762 | O | 1 |
| A1462 | 11.0 | 47.0 | 42.0 | 17.461 | O | 1 |
| A1463 | 10.0 | 48.0 | 42.0 | 17.160 | O | 1 |
| A1464 | 9.0 | 49.0 | 42.0 | 16.859 | O | 1 |
| A1465 | 8.0 | 50.0 | 42.0 | 16.558 | O | 1 |
| A1466 | 7.0 | 51.0 | 42.0 | 16.257 | O | 1 |

[Table 243]

| A1467 | 6.0 | 52.0 | 42.0 | 15.957 | O | 1 |
|---|---|---|---|---|---|---|
| A1468 | 5.0 | 53.0 | 42.0 | 15.656 | O | 1 |
| A1469 | 4.0 | 54.0 | 42.0 | 15.352 | O | 1 |
| A1470 | 3.0 | 55.0 | 42.0 | 14.997 | O | 1 |
| A1471 | 2.0 | 56.0 | 42.0 | 14.642 | O | 1 |
| A1472 | 1.0 | 57.0 | 42.0 | 14.288 | O | 1 |
| A1473 | 0.0 | 58.0 | 42.0 | 13.933 | O | 1 |
| A1474 | 17.0 | 39.0 | 44.0 | 19.166 | X | 1 |
| A1475 | 16.5 | 39.5 | 44.0 | 19.015 | X | 1 |
| A1476 | 16.4 | 39.6 | 44.0 | 18.985 | O | 1 |
| A1477 | 16.0 | 40.0 | 44.0 | 18.865 | O | 1 |
| A1478 | 15.0 | 41.0 | 44.0 | 18.564 | O | 1 |
| A1479 | 14.0 | 42.0 | 44.0 | 18.263 | O | 1 |
| A1480 | 13.0 | 43.0 | 44.0 | 17.962 | O | 1 |
| A1481 | 12.0 | 44.0 | 44.0 | 17.662 | O | 1 |
| A1482 | 11.0 | 45.0 | 44.0 | 17.361 | O | 1 |
| A1483 | 10.0 | 46.0 | 44.0 | 17.060 | O | 1 |
| A1484 | 9.0 | 47.0 | 44.0 | 16.759 | O | 1 |
| A1485 | 8.0 | 48.0 | 44.0 | 16.458 | O | 1 |
| A1486 | 7.0 | 49.0 | 44.0 | 16.157 | O | 1 |
| A1487 | 6.0 | 50.0 | 44.0 | 15.857 | O | 1 |
| A1488 | 5.0 | 51.0 | 44.0 | 15.556 | O | 1 |
| A1489 | 4.0 | 52.0 | 44.0 | 15.241 | O | 1 |
| A1490 | 3.0 | 53.0 | 44.0 | 14.887 | O | 1 |
| A1491 | 2.0 | 54.0 | 44.0 | 14.532 | O | 1 |
| A1492 | 1.0 | 55.0 | 44.0 | 14.177 | O | 1 |
| A1493 | 0.0 | 56.0 | 44.0 | 13.822 | O | 1 |
| A1494 | 17.0 | 38.0 | 45.0 | 19.116 | X | 1 |
| A1495 | 16.7 | 38.3 | 45.0 | 19.025 | X | 1 |
| A1496 | 16.6 | 38.4 | 45.0 | 18.995 | O | 1 |
| A1497 | 16.0 | 39.0 | 45.0 | 18.815 | O | 1 |
| A1498 | 15.0 | 40.0 | 45.0 | 18.514 | O | 1 |
| A1499 | 14.0 | 41.0 | 45.0 | 18.213 | O | 1 |
| A1500 | 13.0 | 42.0 | 45.0 | 17.912 | O | 1 |
| A1501 | 12.0 | 43.0 | 45.0 | 17.612 | O | 1 |
| A1502 | 11.0 | 44.0 | 45.0 | 17.311 | O | 1 |
| A1503 | 10.0 | 45.0 | 45.0 | 17.010 | O | 1 |
| A1504 | 9.0 | 46.0 | 45.0 | 16.709 | O | 1 |
| A1505 | 8.0 | 47.0 | 45.0 | 16.408 | O | 1 |
| A1506 | 7.0 | 48.0 | 45.0 | 16.107 | O | 1 |
| A1507 | 6.0 | 49.0 | 45.0 | 15.807 | O | 1 |
| A1508 | 5.0 | 50.0 | 45.0 | 15.506 | O | 1 |
| A1509 | 4.0 | 51.0 | 45.0 | 15.186 | O | 1 |
| A1510 | 3.0 | 52.0 | 45.0 | 14.831 | O | 1 |
| A1511 | 2.0 | 53.0 | 45.0 | 14.477 | O | 1 |
| A1512 | 1.0 | 54.0 | 45.0 | 14.122 | O | 1 |
| A1513 | 0.0 | 55.0 | 45.0 | 13.767 | O | 1 |
| A1514 | 18.0 | 36.0 | 46.0 | 19.367 | X | 1 |
| A1515 | 17.0 | 37.0 | 46.0 | 19.066 | X | 1 |
| A1516 | 16.8 | 37.2 | 46.0 | 19.006 | X | 1 |

[Table 244]

| A1517 | 16.7 | 37.3 | 46.0 | 18.975 | O | 1 |
|-------|------|------|------|--------|---|---|
| A1518 | 16.0 | 38.0 | 46.0 | 18.765 | O | 1 |
| A1519 | 15.0 | 39.0 | 46.0 | 18.464 | O | 1 |
| A1520 | 14.0 | 40.0 | 46.0 | 18.163 | O | 1 |
| A1521 | 13.0 | 41.0 | 46.0 | 17.862 | O | 1 |
| A1522 | 12.0 | 42.0 | 46.0 | 17.562 | O | 1 |
| A1523 | 11.0 | 43.0 | 46.0 | 17.261 | O | 1 |
| A1524 | 10.0 | 44.0 | 46.0 | 16.960 | O | 1 |
| A1525 | 9.0 | 45.0 | 46.0 | 16.659 | O | 1 |
| A1526 | 8.0 | 46.0 | 46.0 | 16.358 | O | 1 |
| A1527 | 7.0 | 47.0 | 46.0 | 16.057 | O | 1 |
| A1528 | 6.0 | 48.0 | 46.0 | 15.757 | O | 1 |
| A1529 | 5.0 | 49.0 | 46.0 | 15.456 | O | 1 |
| A1530 | 4.0 | 50.0 | 46.0 | 15.131 | O | 1 |
| A1531 | 3.0 | 51.0 | 46.0 | 14.776 | O | 1 |
| A1532 | 2.0 | 52.0 | 46.0 | 14.421 | O | 1 |
| A1533 | 1.0 | 53.0 | 46.0 | 14.067 | O | 1 |
| A1534 | 0.0 | 54.0 | 46.0 | 13.712 | O | 1 |
| A1535 | 17.0 | 36.0 | 47.0 | 19.016 | X | 1 |
| A1536 | 16.9 | 36.1 | 47.0 | 18.986 | O | 1 |
| A1537 | 16.0 | 37.0 | 47.0 | 18.715 | O | 1 |
| A1538 | 15.0 | 38.0 | 47.0 | 18.414 | O | 1 |
| A1539 | 14.0 | 39.0 | 47.0 | 18.113 | O | 1 |
| A1540 | 13.0 | 40.0 | 47.0 | 17.812 | O | 1 |
| A1541 | 12.0 | 41.0 | 47.0 | 17.512 | O | 1 |
| A1542 | 11.0 | 42.0 | 47.0 | 17.211 | O | 1 |
| A1543 | 10.0 | 43.0 | 47.0 | 16.910 | O | 1 |
| A1544 | 9.0 | 44.0 | 47.0 | 16.609 | O | 1 |
| A1545 | 8.0 | 45.0 | 47.0 | 16.308 | O | 1 |
| A1546 | 7.0 | 46.0 | 47.0 | 16.007 | O | 1 |
| A1547 | 6.0 | 47.0 | 47.0 | 15.707 | O | 1 |
| A1548 | 5.0 | 48.0 | 47.0 | 15.406 | O | 1 |
| A1549 | 4.0 | 49.0 | 47.0 | 15.076 | O | 1 |
| A1550 | 3.0 | 50.0 | 47.0 | 14.721 | O | 1 |
| A1551 | 2.0 | 51.0 | 47.0 | 14.366 | O | 1 |
| A1552 | 1.0 | 52.0 | 47.0 | 14.012 | O | 1 |
| A1553 | 0.0 | 53.0 | 47.0 | 13.657 | O | 1 |
| A1554 | 19.0 | 32.0 | 49.0 | 19.517 | X | 1 |
| A1555 | 18.0 | 33.0 | 49.0 | 19.217 | X | 1 |
| A1556 | 17.5 | 33.5 | 49.0 | 19.066 | X | 1 |
| A1557 | 17.4 | 33.6 | 49.0 | 19.036 | X | 1 |
| A1558 | 17.0 | 34.0 | 49.0 | 18.916 | O | 1 |
| A1559 | 16.0 | 35.0 | 49.0 | 18.615 | O | 1 |
| A1560 | 15.0 | 36.0 | 49.0 | 18.314 | O | 1 |
| A1561 | 14.0 | 37.0 | 49.0 | 18.013 | O | 1 |
| A1562 | 13.0 | 38.0 | 49.0 | 17.712 | O | 1 |
| A1563 | 12.0 | 39.0 | 49.0 | 17.412 | O | 1 |
| A1564 | 11.0 | 40.0 | 49.0 | 17.111 | O | 1 |
| A1565 | 10.0 | 41.0 | 49.0 | 16.810 | O | 1 |
| A1566 | 9.0 | 42.0 | 49.0 | 16.509 | O | 1 |

[Table 245]

| A1567 | 8.0 | 43.0 | 49.0 | 16.208 | O | 1 |
|---|---|---|---|---|---|---|
| A1568 | 7.0 | 44.0 | 49.0 | 15.907 | O | 1 |
| A1569 | 6.0 | 45.0 | 49.0 | 15.607 | O | 1 |
| A1570 | 5.0 | 46.0 | 49.0 | 15.306 | O | 1 |
| A1571 | 4.0 | 47.0 | 49.0 | 14.965 | O | 1 |
| A1572 | 3.0 | 48.0 | 49.0 | 14.611 | O | 1 |
| A1573 | 2.0 | 49.0 | 49.0 | 14.256 | O | 1 |
| A1574 | 1.0 | 50.0 | 49.0 | 13.901 | O | 1 |
| A1575 | 0.0 | 51.0 | 49.0 | 13.546 | O | 1 |
| A1576 | 18.0 | 32.0 | 50.0 | 19.167 | X | 1 |
| A1577 | 17.5 | 32.5 | 50.0 | 19.016 | X | 1 |
| A1578 | 17.4 | 32.6 | 50.0 | 18.986 | O | 1 |
| A1579 | 17.0 | 33.0 | 50.0 | 18.866 | O | 1 |
| A1580 | 16.0 | 34.0 | 50.0 | 18.565 | O | 1 |
| A1581 | 15.0 | 35.0 | 50.0 | 18.264 | O | 1 |
| A1582 | 14.0 | 36.0 | 50.0 | 17.963 | O | 1 |
| A1583 | 13.0 | 37.0 | 50.0 | 17.662 | O | 1 |
| A1584 | 12.0 | 38.0 | 50.0 | 17.362 | O | 1 |
| A1585 | 11.0 | 39.0 | 50.0 | 17.061 | O | 1 |
| A1586 | 10.0 | 40.0 | 50.0 | 16.760 | O | 1 |
| A1587 | 9.0 | 41.0 | 50.0 | 16.459 | O | 1 |
| A1588 | 8.0 | 42.0 | 50.0 | 16.158 | O | 1 |
| A1589 | 7.0 | 43.0 | 50.0 | 15.857 | O | 1 |
| A1590 | 6.0 | 44.0 | 50.0 | 15.557 | O | 1 |
| A1591 | 5.0 | 45.0 | 50.0 | 15.256 | O | 1 |
| A1592 | 4.0 | 46.0 | 50.0 | 14.910 | O | 1 |
| A1593 | 3.0 | 47.0 | 50.0 | 14.555 | O | 1 |
| A1594 | 2.0 | 48.0 | 50.0 | 14.201 | O | 1 |
| A1595 | 1.0 | 49.0 | 50.0 | 13.846 | O | 1 |
| A1596 | 0.0 | 50.0 | 50.0 | 13.491 | O | 1 |
| A1597 | 18.0 | 30.0 | 52.0 | 19.067 | X | 1 |
| A1598 | 17.8 | 30.2 | 52.0 | 19.006 | X | 1 |
| A1599 | 17.7 | 30.3 | 52.0 | 18.976 | O | 1 |
| A1600 | 17.0 | 31.0 | 52.0 | 18.766 | O | 1 |
| A1601 | 16.0 | 32.0 | 52.0 | 18.465 | O | 1 |
| A1602 | 15.0 | 33.0 | 52.0 | 18.164 | O | 1 |
| A1603 | 14.0 | 34.0 | 52.0 | 17.863 | O | 1 |
| A1604 | 13.0 | 35.0 | 52.0 | 17.562 | O | 1 |
| A1605 | 12.0 | 36.0 | 52.0 | 17.262 | O | 1 |
| A1606 | 11.0 | 37.0 | 52.0 | 16.961 | O | 1 |
| A1607 | 10.0 | 38.0 | 52.0 | 16.660 | O | 1 |
| A1608 | 9.0 | 39.0 | 52.0 | 16.359 | O | 1 |
| A1609 | 8.0 | 40.0 | 52.0 | 16.058 | O | 1 |
| A1610 | 7.0 | 41.0 | 52.0 | 15.757 | O | 1 |
| A1611 | 6.0 | 42.0 | 52.0 | 15.457 | O | 1 |
| A1612 | 5.0 | 43.0 | 52.0 | 15.154 | O | 1 |
| A1613 | 4.0 | 44.0 | 52.0 | 14.800 | O | 1 |
| A1614 | 3.0 | 45.0 | 52.0 | 14.445 | O | 1 |
| A1615 | 2.0 | 46.0 | 52.0 | 14.090 | O | 1 |
| A1616 | 1.0 | 47.0 | 52.0 | 13.736 | O | 1 |

[Table 246]

| A1617 | 0.0 | 48.0 | 52.0 | 13.381 | O | 1 |
|---|---|---|---|---|---|---|
| A1618 | 19.0 | 28.0 | 53.0 | 19.317 | X | 1 |
| A1619 | 18.0 | 29.0 | 53.0 | 19.017 | X | 1 |
| A1620 | 17.9 | 29.1 | 53.0 | 18.987 | O | 1 |
| A1621 | 17.0 | 30.0 | 53.0 | 18.716 | O | 1 |
| A1622 | 16.0 | 31.0 | 53.0 | 18.415 | O | 1 |
| A1623 | 15.0 | 32.0 | 53.0 | 18.114 | O | 1 |
| A1624 | 14.0 | 33.0 | 53.0 | 17.813 | O | 1 |
| A1625 | 13.0 | 34.0 | 53.0 | 17.512 | O | 1 |
| A1626 | 12.0 | 35.0 | 53.0 | 17.212 | O | 1 |
| A1627 | 11.0 | 36.0 | 53.0 | 16.911 | O | 1 |
| A1628 | 10.0 | 37.0 | 53.0 | 16.610 | O | 1 |
| A1629 | 9.0 | 38.0 | 53.0 | 16.309 | O | 1 |
| A1630 | 8.0 | 39.0 | 53.0 | 16.008 | O | 1 |
| A1631 | 7.0 | 40.0 | 53.0 | 15.707 | O | 1 |
| A1632 | 6.0 | 41.0 | 53.0 | 15.407 | O | 1 |
| A1633 | 5.0 | 42.0 | 53.0 | 15.099 | O | 1 |
| A1634 | 4.0 | 43.0 | 53.0 | 14.744 | O | 1 |
| A1635 | 3.0 | 44.0 | 53.0 | 14.390 | O | 1 |
| A1636 | 2.0 | 45.0 | 53.0 | 14.035 | O | 1 |
| A1637 | 1.0 | 46.0 | 53.0 | 13.680 | O | 1 |
| A1638 | 0.0 | 47.0 | 53.0 | 13.326 | O | 1 |
| A1639 | 19.0 | 27.0 | 54.0 | 19.267 | X | 1 |
| A1640 | 18.2 | 27.8 | 54.0 | 19.027 | X | 1 |
| A1641 | 18.1 | 27.9 | 54.0 | 18.997 | O | 1 |
| A1642 | 18.0 | 28.0 | 54.0 | 18.967 | O | 1 |
| A1643 | 17.0 | 29.0 | 54.0 | 18.666 | O | 1 |
| A1644 | 16.0 | 30.0 | 54.0 | 18.365 | O | 1 |
| A1645 | 15.0 | 31.0 | 54.0 | 18.064 | O | 1 |
| A1646 | 14.0 | 32.0 | 54.0 | 17.763 | O | 1 |
| A1647 | 13.0 | 33.0 | 54.0 | 17.462 | O | 1 |
| A1648 | 12.0 | 34.0 | 54.0 | 17.162 | O | 1 |
| A1649 | 11.0 | 35.0 | 54.0 | 16.861 | O | 1 |
| A1650 | 10.0 | 36.0 | 54.0 | 16.560 | O | 1 |
| A1651 | 9.0 | 37.0 | 54.0 | 16.259 | O | 1 |
| A1652 | 8.0 | 38.0 | 54.0 | 15.958 | O | 1 |
| A1653 | 7.0 | 39.0 | 54.0 | 15.657 | O | 1 |
| A1654 | 6.0 | 40.0 | 54.0 | 15.357 | O | 1 |
| A1655 | 5.0 | 41.0 | 54.0 | 15.044 | O | 1 |
| A1656 | 4.0 | 42.0 | 54.0 | 14.689 | O | 1 |
| A1657 | 3.0 | 43.0 | 54.0 | 14.335 | O | 1 |
| A1658 | 2.0 | 44.0 | 54.0 | 13.980 | O | 1 |
| A1659 | 1.0 | 45.0 | 54.0 | 13.625 | O | 1 |
| A1660 | 0.0 | 46.0 | 54.0 | 13.271 | O | 1 |
| A1661 | 19.0 | 26.0 | 55.0 | 19.217 | X | 1 |
| A1662 | 18.3 | 26.7 | 55.0 | 19.007 | X | 1 |
| A1663 | 18.2 | 26.8 | 55.0 | 18.977 | O | 1 |
| A1664 | 18.0 | 27.0 | 55.0 | 18.917 | O | 1 |
| A1665 | 17.0 | 28.0 | 55.0 | 18.616 | O | 1 |
| A1666 | 16.0 | 29.0 | 55.0 | 18.315 | O | 1 |

[Table 247]

| A1667 | 15.0 | 30.0 | 55.0 | 18.014 | O | 1 |
|---|---|---|---|---|---|---|
| A1668 | 14.0 | 31.0 | 55.0 | 17.713 | O | 1 |
| A1669 | 13.0 | 32.0 | 55.0 | 17.412 | O | 1 |
| A1670 | 12.0 | 33.0 | 55.0 | 17.112 | O | 1 |
| A1671 | 11.0 | 34.0 | 55.0 | 16.811 | O | 1 |
| A1672 | 10.0 | 35.0 | 55.0 | 16.510 | O | 1 |
| A1673 | 9.0 | 36.0 | 55.0 | 16.209 | O | 1 |
| A1674 | 8.0 | 37.0 | 55.0 | 15.908 | O | 1 |
| A1675 | 7.0 | 38.0 | 55.0 | 15.608 | O | 1 |
| A1676 | 6.0 | 39.0 | 55.0 | 15.307 | O | 1 |
| A1677 | 5.0 | 40.0 | 55.0 | 14.989 | O | 1 |
| A1678 | 4.0 | 41.0 | 55.0 | 14.634 | O | 1 |
| A1679 | 3.0 | 42.0 | 55.0 | 14.279 | O | 1 |
| A1680 | 2.0 | 43.0 | 55.0 | 13.925 | O | 1 |
| A1681 | 1.0 | 44.0 | 55.0 | 13.570 | O | 1 |
| A1682 | 0.0 | 45.0 | 55.0 | 13.215 | O | 1 |
| A1683 | 20.0 | 24.0 | 56.0 | 19.468 | X | 1 |
| A1684 | 19.0 | 25.0 | 56.0 | 19.167 | X | 1 |
| A1685 | 18.5 | 25.5 | 56.0 | 19.017 | X | 1 |
| A1686 | 18.4 | 25.6 | 56.0 | 18.987 | O | 1 |
| A1687 | 18.0 | 26.0 | 56.0 | 18.867 | O | 1 |
| A1688 | 17.0 | 27.0 | 56.0 | 18.566 | O | 1 |
| A1689 | 16.0 | 28.0 | 56.0 | 18.265 | O | 1 |
| A1690 | 15.0 | 29.0 | 56.0 | 17.964 | O | 1 |
| A1691 | 14.0 | 30.0 | 56.0 | 17.663 | O | 1 |
| A1692 | 13.0 | 31.0 | 56.0 | 17.363 | O | 1 |
| A1693 | 12.0 | 32.0 | 56.0 | 17.062 | O | 1 |
| A1694 | 11.0 | 33.0 | 56.0 | 16.761 | O | 1 |
| A1695 | 10.0 | 34.0 | 56.0 | 16.460 | O | 1 |
| A1696 | 9.0 | 35.0 | 56.0 | 16.159 | O | 1 |
| A1697 | 8.0 | 36.0 | 56.0 | 15.858 | O | 1 |
| A1698 | 7.0 | 37.0 | 56.0 | 15.558 | O | 1 |
| A1699 | 6.0 | 38.0 | 56.0 | 15.257 | O | 1 |
| A1700 | 5.0 | 39.0 | 56.0 | 14.934 | O | 1 |
| A1701 | 4.0 | 40.0 | 56.0 | 14.579 | O | 1 |
| A1702 | 3.0 | 41.0 | 56.0 | 14.224 | O | 1 |
| A1703 | 2.0 | 42.0 | 56.0 | 13.870 | O | 1 |
| A1704 | 1.0 | 43.0 | 56.0 | 13.515 | O | 1 |
| A1705 | 0.0 | 44.0 | 56.0 | 13.160 | O | 1 |
| A1706 | 19.0 | 24.0 | 57.0 | 19.117 | X | 1 |
| A1707 | 18.7 | 24.3 | 57.0 | 19.027 | X | 1 |
| A1708 | 18.6 | 24.4 | 57.0 | 18.997 | O | 1 |
| A1709 | 18.0 | 25.0 | 57.0 | 18.817 | O | 1 |
| A1710 | 17.0 | 26.0 | 57.0 | 18.516 | O | 1 |
| A1711 | 16.0 | 27.0 | 57.0 | 18.215 | O | 1 |
| A1712 | 15.0 | 28.0 | 57.0 | 17.914 | O | 1 |
| A1713 | 14.0 | 29.0 | 57.0 | 17.613 | O | 1 |
| A1714 | 13.0 | 30.0 | 57.0 | 17.313 | O | 1 |
| A1715 | 12.0 | 31.0 | 57.0 | 17.012 | O | 1 |
| A1716 | 11.0 | 32.0 | 57.0 | 16.711 | O | 1 |

[Table 248]

| | | | | | | |
|---|---|---|---|---|---|---|
| A1717 | 10.0 | 33.0 | 57.0 | 16.410 | O | 1 |
| A1718 | 9.0 | 34.0 | 57.0 | 16.109 | O | 1 |
| A1719 | 8.0 | 35.0 | 57.0 | 15.808 | O | 1 |
| A1720 | 7.0 | 36.0 | 57.0 | 15.508 | O | 1 |
| A1721 | 6.0 | 37.0 | 57.0 | 15.207 | O | 1 |
| A1722 | 5.0 | 38.0 | 57.0 | 14.878 | O | 1 |
| A1723 | 4.0 | 39.0 | 57.0 | 14.524 | O | 1 |
| A1724 | 3.0 | 40.0 | 57.0 | 14.169 | O | 1 |
| A1725 | 2.0 | 41.0 | 57.0 | 13.814 | O | 1 |
| A1726 | 1.0 | 42.0 | 57.0 | 13.460 | O | 1 |
| A1727 | 0.0 | 43.0 | 57.0 | 13.105 | O | 1 |
| A1728 | 19.0 | 23.0 | 58.0 | 19.068 | X | 1 |
| A1729 | 18.8 | 23.2 | 58.0 | 19.007 | X | 1 |
| A1730 | 18.7 | 23.3 | 58.0 | 18.977 | O | 1 |
| A1731 | 18.0 | 24.0 | 58.0 | 18.767 | O | 1 |
| A1732 | 17.0 | 25.0 | 58.0 | 18.466 | O | 1 |
| A1733 | 16.0 | 26.0 | 58.0 | 18.165 | O | 1 |
| A1734 | 15.0 | 27.0 | 58.0 | 17.864 | O | 1 |
| A1735 | 14.0 | 28.0 | 58.0 | 17.563 | O | 1 |
| A1736 | 13.0 | 29.0 | 58.0 | 17.263 | O | 1 |
| A1737 | 12.0 | 30.0 | 58.0 | 16.962 | O | 1 |
| A1738 | 11.0 | 31.0 | 58.0 | 16.661 | O | 1 |
| A1739 | 10.0 | 32.0 | 58.0 | 16.360 | O | 1 |
| A1740 | 9.0 | 33.0 | 58.0 | 16.059 | O | 1 |
| A1741 | 8.0 | 34.0 | 58.0 | 15.758 | O | 1 |
| A1742 | 7.0 | 35.0 | 58.0 | 15.458 | O | 1 |
| A1743 | 6.0 | 36.0 | 58.0 | 15.157 | O | 1 |
| A1744 | 5.0 | 37.0 | 58.0 | 14.823 | O | 1 |
| A1745 | 4.0 | 38.0 | 58.0 | 14.469 | O | 1 |
| A1746 | 3.0 | 39.0 | 58.0 | 14.114 | O | 1 |
| A1747 | 2.0 | 40.0 | 58.0 | 13.759 | O | 1 |
| A1748 | 1.0 | 41.0 | 58.0 | 13.404 | O | 1 |
| A1749 | 0.0 | 42.0 | 58.0 | 13.050 | O | 1 |
| A1750 | 21.0 | 20.0 | 59.0 | 19.619 | X | 1 |
| A1751 | 19.0 | 22.0 | 59.0 | 19.018 | X | 1 |
| A1752 | 18.9 | 22.1 | 59.0 | 18.987 | O | 1 |
| A1753 | 18.0 | 23.0 | 59.0 | 18.717 | O | 1 |
| A1754 | 17.0 | 24.0 | 59.0 | 18.416 | O | 1 |
| A1755 | 16.0 | 25.0 | 59.0 | 18.115 | O | 1 |
| A1756 | 15.0 | 26.0 | 59.0 | 17.814 | O | 1 |
| A1757 | 14.0 | 27.0 | 59.0 | 17.513 | O | 1 |
| A1758 | 13.0 | 28.0 | 59.0 | 17.213 | O | 1 |
| A1759 | 12.0 | 29.0 | 59.0 | 16.912 | O | 1 |
| A1760 | 11.0 | 30.0 | 59.0 | 16.611 | O | 1 |
| A1761 | 10.0 | 31.0 | 59.0 | 16.310 | O | 1 |
| A1762 | 9.0 | 32.0 | 59.0 | 16.009 | O | 1 |
| A1763 | 8.0 | 33.0 | 59.0 | 15.708 | O | 1 |
| A1764 | 7.0 | 34.0 | 59.0 | 15.408 | O | 1 |
| A1765 | 6.0 | 35.0 | 59.0 | 15.107 | O | 1 |
| A1766 | 5.0 | 36.0 | 59.0 | 14.768 | O | 1 |

[Table 249]

| A1767 | 4.0 | 37.0 | 59.0 | 14.413 | O | 1 |
|---|---|---|---|---|---|---|
| A1768 | 3.0 | 38.0 | 59.0 | 14.059 | O | 1 |
| A1769 | 2.0 | 39.0 | 59.0 | 13.704 | O | 1 |
| A1770 | 1.0 | 40.0 | 59.0 | 13.349 | O | 1 |
| A1771 | 0.0 | 41.0 | 59.0 | 12.995 | O | 1 |
| A1772 | 20.0 | 20.0 | 60.0 | 19.268 | X | 1 |
| A1773 | 19.1 | 20.9 | 60.0 | 18.998 | O | 1 |
| A1774 | 19.0 | 21.0 | 60.0 | 18.968 | O | 1 |
| A1775 | 18.0 | 22.0 | 60.0 | 18.667 | O | 1 |
| A1776 | 17.0 | 23.0 | 60.0 | 18.366 | O | 1 |
| A1777 | 16.0 | 24.0 | 60.0 | 18.065 | O | 1 |
| A1778 | 15.0 | 25.0 | 60.0 | 17.764 | O | 1 |
| A1779 | 14.0 | 26.0 | 60.0 | 17.463 | O | 1 |
| A1780 | 13.0 | 27.0 | 60.0 | 17.163 | O | 1 |
| A1781 | 12.0 | 28.0 | 60.0 | 16.862 | O | 1 |
| A1782 | 11.0 | 29.0 | 60.0 | 16.561 | O | 1 |
| A1783 | 10.0 | 30.0 | 60.0 | 16.260 | O | 1 |
| A1784 | 9.0 | 31.0 | 60.0 | 15.959 | O | 1 |
| A1785 | 8.0 | 32.0 | 60.0 | 15.658 | O | 1 |
| A1786 | 7.0 | 33.0 | 60.0 | 15.358 | O | 1 |
| A1787 | 6.0 | 34.0 | 60.0 | 15.057 | O | 1 |
| A1788 | 5.0 | 35.0 | 60.0 | 14.713 | O | 1 |
| A1789 | 4.0 | 36.0 | 60.0 | 14.358 | O | 1 |
| A1790 | 3.0 | 37.0 | 60.0 | 14.003 | O | 1 |
| A1791 | 2.0 | 38.0 | 60.0 | 13.649 | O | 1 |
| A1792 | 1.0 | 39.0 | 60.0 | 13.294 | O | 1 |
| A1793 | 0.0 | 40.0 | 60.0 | 12.939 | O | 1 |
| A1794 | 20.0 | 19.0 | 61.0 | 19.218 | X | 1 |
| A1795 | 19.1 | 19.9 | 61.0 | 18.948 | O | 1 |
| A1796 | 19.0 | 20.0 | 61.0 | 18.918 | O | 1 |
| A1797 | 18.0 | 21.0 | 61.0 | 18.617 | O | 1 |
| A1798 | 17.0 | 22.0 | 61.0 | 18.316 | O | 1 |
| A1799 | 16.0 | 23.0 | 61.0 | 18.015 | O | 1 |
| A1800 | 15.0 | 24.0 | 61.0 | 17.714 | O | 1 |
| A1801 | 14.0 | 25.0 | 61.0 | 17.413 | O | 1 |
| A1802 | 13.0 | 26.0 | 61.0 | 17.113 | O | 1 |
| A1803 | 12.0 | 27.0 | 61.0 | 16.812 | O | 1 |
| A1804 | 11.0 | 28.0 | 61.0 | 16.511 | O | 1 |
| A1805 | 10.0 | 29.0 | 61.0 | 16.210 | O | 1 |
| A1806 | 9.0 | 30.0 | 61.0 | 15.909 | O | 1 |
| A1807 | 8.0 | 31.0 | 61.0 | 15.608 | O | 1 |
| A1808 | 7.0 | 32.0 | 61.0 | 15.308 | O | 1 |
| A1809 | 6.0 | 33.0 | 61.0 | 15.007 | O | 1 |
| A1810 | 5.0 | 34.0 | 61.0 | 14.658 | O | 1 |
| A1811 | 4.0 | 35.0 | 61.0 | 14.303 | O | 1 |
| A1812 | 3.0 | 36.0 | 61.0 | 13.948 | O | 1 |
| A1813 | 2.0 | 37.0 | 61.0 | 13.594 | O | 1 |
| A1814 | 1.0 | 38.0 | 61.0 | 13.239 | O | 1 |
| A1815 | 0.0 | 39.0 | 61.0 | 12.884 | O | 1 |
| A1816 | 20.0 | 18.0 | 62.0 | 19.168 | X | 1 |

[Table 250]

| | | | | | | |
|---|---|---|---|---|---|---|
| A1817 | 19.5 | 18.5 | 62.0 | 19.018 | X | 1 |
| A1818 | 19.4 | 18.6 | 62.0 | 18.988 | O | 1 |
| A1819 | 19.0 | 19.0 | 62.0 | 18.868 | O | 1 |
| A1820 | 18.0 | 20.0 | 62.0 | 18.567 | O | 1 |
| A1821 | 17.0 | 21.0 | 62.0 | 18.266 | O | 1 |
| A1822 | 16.0 | 22.0 | 62.0 | 17.965 | O | 1 |
| A1823 | 15.0 | 23.0 | 62.0 | 17.664 | O | 1 |
| A1824 | 14.0 | 24.0 | 62.0 | 17.363 | O | 1 |
| A1825 | 13.0 | 25.0 | 62.0 | 17.063 | O | 1 |
| A1826 | 12.0 | 26.0 | 62.0 | 16.762 | O | 1 |
| A1827 | 11.0 | 27.0 | 62.0 | 16.461 | O | 1 |
| A1828 | 10.0 | 28.0 | 62.0 | 16.160 | O | 1 |
| A1829 | 9.0 | 29.0 | 62.0 | 15.859 | O | 1 |
| A1830 | 8.0 | 30.0 | 62.0 | 15.558 | O | 1 |
| A1831 | 7.0 | 31.0 | 62.0 | 15.258 | O | 1 |
| A1832 | 6.0 | 32.0 | 62.0 | 14.957 | O | 1 |
| A1833 | 5.0 | 33.0 | 62.0 | 14.602 | O | 1 |
| A1834 | 4.0 | 34.0 | 62.0 | 14.248 | O | 1 |
| A1835 | 3.0 | 35.0 | 62.0 | 13.893 | O | 1 |
| A1836 | 2.0 | 36.0 | 62.0 | 13.538 | O | 1 |
| A1837 | 1.0 | 37.0 | 62.0 | 13.184 | O | 1 |
| A1838 | 0.0 | 38.0 | 62.0 | 12.829 | O | 1 |
| A1839 | 21.0 | 16.0 | 63.0 | 19.419 | X | 1 |
| A1840 | 20.0 | 17.0 | 63.0 | 19.118 | X | 1 |
| A1841 | 19.5 | 17.5 | 63.0 | 18.968 | O | 1 |
| A1842 | 19.4 | 17.6 | 63.0 | 18.938 | O | 1 |
| A1843 | 19.0 | 18.0 | 63.0 | 18.818 | O | 1 |
| A1844 | 18.0 | 19.0 | 63.0 | 18.517 | O | 1 |
| A1845 | 17.0 | 20.0 | 63.0 | 18.216 | O | 1 |
| A1846 | 16.0 | 21.0 | 63.0 | 17.915 | O | 1 |
| A1847 | 15.0 | 22.0 | 63.0 | 17.614 | O | 1 |
| A1848 | 14.0 | 23.0 | 63.0 | 17.313 | O | 1 |
| A1849 | 13.0 | 24.0 | 63.0 | 17.013 | O | 1 |
| A1850 | 12.0 | 25.0 | 63.0 | 16.712 | O | 1 |
| A1851 | 11.0 | 26.0 | 63.0 | 16.411 | O | 1 |
| A1852 | 10.0 | 27.0 | 63.0 | 16.110 | O | 1 |
| A1853 | 9.0 | 28.0 | 63.0 | 15.809 | O | 1 |
| A1854 | 8.0 | 29.0 | 63.0 | 15.508 | O | 1 |
| A1855 | 7.0 | 30.0 | 63.0 | 15.208 | O | 1 |
| A1856 | 6.0 | 31.0 | 63.0 | 14.902 | O | 1 |
| A1857 | 5.0 | 32.0 | 63.0 | 14.547 | O | 1 |
| A1858 | 4.0 | 33.0 | 63.0 | 14.193 | O | 1 |
| A1859 | 3.0 | 34.0 | 63.0 | 13.838 | O | 1 |
| A1860 | 2.0 | 35.0 | 63.0 | 13.483 | O | 1 |
| A1861 | 1.0 | 36.0 | 63.0 | 13.128 | O | 1 |
| A1862 | 0.0 | 37.0 | 63.0 | 12.774 | O | 1 |
| A1863 | 21.0 | 15.0 | 64.0 | 19.369 | X | 1 |
| A1864 | 20.0 | 16.0 | 64.0 | 19.068 | X | 1 |
| A1865 | 19.5 | 16.5 | 64.0 | 18.918 | O | 1 |
| A1866 | 19.4 | 16.6 | 64.0 | 18.888 | O | 1 |

[Table 251]

| A1867 | 19.0 | 17.0 | 64.0 | 18.768 | O | 1 |
|---|---|---|---|---|---|---|
| A1868 | 18.0 | 18.0 | 64.0 | 18.467 | O | 1 |
| A1869 | 17.0 | 19.0 | 64.0 | 18.166 | O | 1 |
| A1870 | 16.0 | 20.0 | 64.0 | 17.865 | O | 1 |
| A1871 | 15.0 | 21.0 | 64.0 | 17.564 | O | 1 |
| A1872 | 14.0 | 22.0 | 64.0 | 17.263 | O | 1 |
| A1873 | 13.0 | 23.0 | 64.0 | 16.963 | O | 1 |
| A1874 | 12.0 | 24.0 | 64.0 | 16.662 | O | 1 |
| A1875 | 11.0 | 25.0 | 64.0 | 16.361 | O | 1 |
| A1876 | 10.0 | 26.0 | 64.0 | 16.060 | O | 1 |
| A1877 | 9.0 | 27.0 | 64.0 | 15.759 | O | 1 |
| A1878 | 8.0 | 28.0 | 64.0 | 15.458 | O | 1 |
| A1879 | 7.0 | 29.0 | 64.0 | 15.158 | O | 1 |
| A1880 | 6.0 | 30.0 | 64.0 | 14.847 | O | 1 |
| A1881 | 5.0 | 31.0 | 64.0 | 14.492 | O | 1 |
| A1882 | 4.0 | 32.0 | 64.0 | 14.137 | O | 1 |
| A1883 | 3.0 | 33.0 | 64.0 | 13.783 | O | 1 |
| A1884 | 2.0 | 34.0 | 64.0 | 13.428 | O | 1 |
| A1885 | 1.0 | 35.0 | 64.0 | 13.073 | O | 1 |
| A1886 | 0.0 | 36.0 | 64.0 | 12.719 | O | 1 |
| A1887 | 20.0 | 15.0 | 65.0 | 19.018 | X | 1 |
| A1888 | 19.9 | 15.1 | 65.0 | 18.988 | O | 1 |
| A1889 | 19.0 | 16.0 | 65.0 | 18.718 | O | 1 |
| A1890 | 18.0 | 17.0 | 65.0 | 18.417 | O | 1 |
| A1891 | 17.0 | 18.0 | 65.0 | 18.116 | O | 1 |
| A1892 | 16.0 | 19.0 | 65.0 | 17.815 | O | 1 |
| A1893 | 15.0 | 20.0 | 65.0 | 17.514 | O | 1 |
| A1894 | 14.0 | 21.0 | 65.0 | 17.213 | O | 1 |
| A1895 | 13.0 | 22.0 | 65.0 | 16.913 | O | 1 |
| A1896 | 12.0 | 23.0 | 65.0 | 16.612 | O | 1 |
| A1897 | 11.0 | 24.0 | 65.0 | 16.311 | O | 1 |
| A1898 | 10.0 | 25.0 | 65.0 | 16.010 | O | 1 |
| A1899 | 9.0 | 26.0 | 65.0 | 15.709 | O | 1 |
| A1900 | 8.0 | 27.0 | 65.0 | 15.408 | O | 1 |
| A1901 | 7.0 | 28.0 | 65.0 | 15.108 | O | 1 |
| A1902 | 6.0 | 29.0 | 65.0 | 14.792 | O | 1 |
| A1903 | 5.0 | 30.0 | 65.0 | 14.437 | O | 1 |
| A1904 | 4.0 | 31.0 | 65.0 | 14.082 | O | 1 |
| A1905 | 3.0 | 32.0 | 65.0 | 13.727 | O | 1 |
| A1906 | 2.0 | 33.0 | 65.0 | 13.373 | O | 1 |
| A1907 | 1.0 | 34.0 | 65.0 | 13.018 | O | 1 |
| A1908 | 0.0 | 35.0 | 65.0 | 12.663 | O | 1 |
| A1909 | 22.0 | 12.0 | 66.0 | 19.570 | X | 1 |
| A1910 | 21.0 | 13.0 | 66.0 | 19.269 | X | 1 |
| A1911 | 20.2 | 13.8 | 66.0 | 19.029 | X | 1 |
| A1912 | 20.1 | 13.9 | 66.0 | 18.999 | O | 1 |
| A1913 | 20.0 | 14.0 | 66.0 | 18.968 | O | 1 |
| A1914 | 19.0 | 15.0 | 66.0 | 18.668 | O | 1 |
| A1915 | 18.0 | 16.0 | 66.0 | 18.367 | O | 1 |
| A1916 | 17.0 | 17.0 | 66.0 | 18.066 | O | 1 |

[Table 252]

| A1917 | 16.0 | 18.0 | 66.0 | 17.765 | O | 1 |
|-------|------|------|------|--------|---|---|
| A1918 | 15.0 | 19.0 | 66.0 | 17.464 | O | 1 |
| A1919 | 14.0 | 20.0 | 66.0 | 17.163 | O | 1 |
| A1920 | 13.0 | 21.0 | 66.0 | 16.863 | O | 1 |
| A1921 | 12.0 | 22.0 | 66.0 | 16.562 | O | 1 |
| A1922 | 11.0 | 23.0 | 66.0 | 16.261 | O | 1 |
| A1923 | 10.0 | 24.0 | 66.0 | 15.960 | O | 1 |
| A1924 | 9.0 | 25.0 | 66.0 | 15.659 | O | 1 |
| A1925 | 8.0 | 26.0 | 66.0 | 15.358 | O | 1 |
| A1926 | 7.0 | 27.0 | 66.0 | 15.058 | O | 1 |
| A1927 | 6.0 | 28.0 | 66.0 | 14.736 | O | 1 |
| A1928 | 5.0 | 29.0 | 66.0 | 14.382 | O | 1 |
| A1929 | 4.0 | 30.0 | 66.0 | 14.027 | O | 1 |
| A1930 | 3.0 | 31.0 | 66.0 | 13.672 | O | 1 |
| A1931 | 2.0 | 32.0 | 66.0 | 13.318 | O | 1 |
| A1932 | 1.0 | 33.0 | 66.0 | 12.963 | O | 1 |
| A1933 | 0.0 | 34.0 | 66.0 | 12.608 | O | 1 |
| A1934 | 22.0 | 11.0 | 67.0 | 19.520 | X | 1 |
| A1935 | 21.0 | 12.0 | 67.0 | 19.219 | X | 1 |
| A1936 | 20.2 | 12.8 | 67.0 | 18.979 | O | 1 |
| A1937 | 20.1 | 12.9 | 67.0 | 18.949 | O | 1 |
| A1938 | 20.0 | 13.0 | 67.0 | 18.918 | O | 1 |
| A1939 | 19.0 | 14.0 | 67.0 | 18.618 | O | 1 |
| A1940 | 18.0 | 15.0 | 67.0 | 18.317 | O | 1 |
| A1941 | 17.0 | 16.0 | 67.0 | 18.016 | O | 1 |
| A1942 | 16.0 | 17.0 | 67.0 | 17.715 | O | 1 |
| A1943 | 15.0 | 18.0 | 67.0 | 17.414 | O | 1 |
| A1944 | 14.0 | 19.0 | 67.0 | 17.113 | O | 1 |
| A1945 | 13.0 | 20.0 | 67.0 | 16.813 | O | 1 |
| A1946 | 12.0 | 21.0 | 67.0 | 16.512 | O | 1 |
| A1947 | 11.0 | 22.0 | 67.0 | 16.211 | O | 1 |
| A1948 | 10.0 | 23.0 | 67.0 | 15.910 | O | 1 |
| A1949 | 9.0 | 24.0 | 67.0 | 15.609 | O | 1 |
| A1950 | 8.0 | 25.0 | 67.0 | 15.308 | O | 1 |
| A1951 | 7.0 | 26.0 | 67.0 | 15.008 | O | 1 |
| A1952 | 6.0 | 27.0 | 67.0 | 14.681 | O | 1 |
| A1953 | 5.0 | 28.0 | 67.0 | 14.326 | O | 1 |
| A1954 | 4.0 | 29.0 | 67.0 | 13.972 | O | 1 |
| A1955 | 3.0 | 30.0 | 67.0 | 13.617 | O | 1 |
| A1956 | 2.0 | 31.0 | 67.0 | 13.262 | O | 1 |
| A1957 | 1.0 | 32.0 | 67.0 | 12.908 | O | 1 |
| A1958 | 0.0 | 33.0 | 67.0 | 12.553 | O | 1 |
| A1959 | 21.0 | 11.0 | 68.0 | 19.169 | X | 1 |
| A1960 | 20.5 | 11.5 | 68.0 | 19.019 | X | 1 |
| A1961 | 20.4 | 11.6 | 68.0 | 18.989 | O | 1 |
| A1962 | 20.0 | 12.0 | 68.0 | 18.868 | O | 1 |
| A1963 | 19.0 | 13.0 | 68.0 | 18.568 | O | 1 |
| A1964 | 18.0 | 14.0 | 68.0 | 18.267 | O | 1 |
| A1965 | 17.0 | 15.0 | 68.0 | 17.966 | O | 1 |
| A1966 | 16.0 | 16.0 | 68.0 | 17.665 | O | 1 |

[Table 253]

| | | | | | |
|---|---|---|---|---|---|
| A1967 | 15.0 | 17.0 | 68.0 | 17.364 | O | 1 |
| A1968 | 14.0 | 18.0 | 68.0 | 17.063 | O | 1 |
| A1969 | 13.0 | 19.0 | 68.0 | 16.763 | O | 1 |
| A1970 | 12.0 | 20.0 | 68.0 | 16.462 | O | 1 |
| A1971 | 11.0 | 21.0 | 68.0 | 16.161 | O | 1 |
| A1972 | 10.0 | 22.0 | 68.0 | 15.860 | O | 1 |
| A1973 | 9.0 | 23.0 | 68.0 | 15.559 | O | 1 |
| A1974 | 8.0 | 24.0 | 68.0 | 15.258 | O | 1 |
| A1975 | 7.0 | 25.0 | 68.0 | 14.958 | O | 1 |
| A1976 | 6.0 | 26.0 | 68.0 | 14.626 | O | 1 |
| A1977 | 5.0 | 27.0 | 68.0 | 14.271 | O | 1 |
| A1978 | 4.0 | 28.0 | 68.0 | 13.917 | O | 1 |
| A1979 | 3.0 | 29.0 | 68.0 | 13.562 | O | 1 |
| A1980 | 2.0 | 30.0 | 68.0 | 13.207 | O | 1 |
| A1981 | 1.0 | 31.0 | 68.0 | 12.852 | O | 1 |
| A1982 | 0.0 | 32.0 | 68.0 | 12.498 | O | 1 |
| A1983 | 23.0 | 8.0 | 69.0 | 19.721 | X | 1 |
| A1984 | 21.0 | 10.0 | 69.0 | 19.119 | X | 1 |
| A1985 | 20.7 | 10.3 | 69.0 | 19.029 | X | 1 |
| A1986 | 20.6 | 10.4 | 69.0 | 18.999 | O | 1 |
| A1987 | 20.0 | 11.0 | 69.0 | 18.818 | O | 1 |
| A1988 | 19.0 | 12.0 | 69.0 | 18.518 | O | 1 |
| A1989 | 18.0 | 13.0 | 69.0 | 18.217 | O | 1 |
| A1990 | 17.0 | 14.0 | 69.0 | 17.916 | O | 1 |
| A1991 | 16.0 | 15.0 | 69.0 | 17.615 | O | 1 |
| A1992 | 15.0 | 16.0 | 69.0 | 17.314 | O | 1 |
| A1993 | 14.0 | 17.0 | 69.0 | 17.013 | O | 1 |
| A1994 | 13.0 | 18.0 | 69.0 | 16.713 | O | 1 |
| A1995 | 12.0 | 19.0 | 69.0 | 16.412 | O | 1 |
| A1996 | 11.0 | 20.0 | 69.0 | 16.111 | O | 1 |
| A1997 | 10.0 | 21.0 | 69.0 | 15.810 | O | 1 |
| A1998 | 9.0 | 22.0 | 69.0 | 15.509 | O | 1 |
| A1999 | 8.0 | 23.0 | 69.0 | 15.208 | O | 1 |
| A2000 | 7.0 | 24.0 | 69.0 | 14.908 | O | 1 |
| A2001 | 6.0 | 25.0 | 69.0 | 14.571 | O | 1 |
| A2002 | 5.0 | 26.0 | 69.0 | 14.216 | O | 1 |
| A2003 | 4.0 | 27.0 | 69.0 | 13.861 | O | 1 |
| A2004 | 3.0 | 28.0 | 60.0 | 13.507 | O | 1 |
| A2005 | 2.0 | 29.0 | 69.0 | 13.152 | O | 1 |
| A2006 | 1.0 | 30.0 | 69.0 | 12.797 | O | 1 |
| A2007 | 0.0 | 31.0 | 69.0 | 12.443 | O | 1 |
| A2008 | 21.0 | 9.0 | 70.0 | 19.069 | X | 1 |
| A2009 | 20.8 | 9.2 | 70.0 | 19.009 | X | 1 |
| A2010 | 20.7 | 9.3 | 70.0 | 18.979 | O | 1 |
| A2011 | 20.0 | 10.0 | 70.0 | 18.768 | O | 1 |
| A2012 | 19.0 | 11.0 | 70.0 | 18.468 | O | 1 |
| A2013 | 18.0 | 12.0 | 70.0 | 18.167 | O | 1 |
| A2014 | 17.0 | 13.0 | 70.0 | 17.866 | O | 1 |
| A2015 | 16.0 | 14.0 | 70.0 | 17.565 | O | 1 |
| A2016 | 15.0 | 15.0 | 70.0 | 17.264 | O | 1 |

[Table 254]

| A2017 | 14.0 | 16.0 | 70.0 | 16.963 | O | 1 |
|-------|------|------|------|--------|---|---|
| A2018 | 13.0 | 17.0 | 70.0 | 16.663 | O | 1 |
| A2019 | 12.0 | 18.0 | 70.0 | 16.362 | O | 1 |
| A2020 | 11.0 | 19.0 | 70.0 | 16.061 | O | 1 |
| A2021 | 10.0 | 20.0 | 70.0 | 15.760 | O | 1 |
| A2022 | 9.0 | 21.0 | 70.0 | 15.459 | O | 1 |
| A2023 | 8.0 | 22.0 | 70.0 | 15.159 | O | 1 |
| A2024 | 7.0 | 23.0 | 70.0 | 14.858 | O | 1 |
| A2025 | 6.0 | 24.0 | 70.0 | 14.516 | O | 1 |
| A2026 | 5.0 | 25.0 | 70.0 | 14.161 | O | 1 |
| A2027 | 4.0 | 26.0 | 70.0 | 13.806 | O | 1 |
| A2028 | 3.0 | 27.0 | 70.0 | 13.451 | O | 1 |
| A2029 | 2.0 | 28.0 | 70.0 | 13.097 | O | 1 |
| A2030 | 1.0 | 29.0 | 70.0 | 12.742 | O | 1 |
| A2031 | 0.0 | 30.0 | 70.0 | 12.387 | O | 1 |
| A2032 | 25.0 | 4.0 | 71.0 | 20.223 | X | 1 |
| A2033 | 21.0 | 8.0 | 71.0 | 19.019 | X | 1 |
| A2034 | 20.9 | 8.1 | 71.0 | 18.989 | O | 1 |
| A2035 | 20.0 | 9.0 | 71.0 | 18.718 | O | 1 |
| A2036 | 19.0 | 10.0 | 71.0 | 18.418 | O | 1 |
| A2037 | 18.0 | 11.0 | 71.0 | 18.117 | O | 1 |
| A2038 | 17.0 | 12.0 | 71.0 | 17.816 | O | 1 |
| A2039 | 16.0 | 13.0 | 71.0 | 17.515 | O | 1 |
| A2040 | 15.0 | 14.0 | 71.0 | 17.214 | O | 1 |
| A2041 | 14.0 | 15.0 | 71.0 | 16.913 | O | 1 |
| A2042 | 13.0 | 16.0 | 71.0 | 16.613 | O | 1 |
| A2043 | 12.0 | 17.0 | 71.0 | 16.312 | O | 1 |
| A2044 | 11.0 | 18.0 | 71.0 | 16.011 | O | 1 |
| A2045 | 10.0 | 19.0 | 71.0 | 15.710 | O | 1 |
| A2046 | 9.0 | 20.0 | 71.0 | 15.409 | O | 1 |
| A2047 | 8.0 | 21.0 | 71.0 | 15.109 | O | 1 |
| A2048 | 7.0 | 22.0 | 71.0 | 14.808 | O | 1 |
| A2049 | 6.0 | 23.0 | 71.0 | 14.460 | O | 1 |
| A2050 | 5.0 | 24.0 | 71.0 | 14.106 | O | 1 |
| A2051 | 4.0 | 25.0 | 71.0 | 13.751 | O | 1 |
| A2052 | 3.0 | 26.0 | 71.0 | 13.396 | O | 1 |
| A2053 | 2.0 | 27.0 | 71.0 | 13.042 | O | 1 |
| A2054 | 1.0 | 28.0 | 71.0 | 12.687 | O | 1 |
| A2055 | 0.0 | 29.0 | 71.0 | 12.332 | O | 1 |
| A2056 | 21.0 | 7.0 | 72.0 | 18.969 | O | 1 |
| A2057 | 20.8 | 7.2 | 72.0 | 18.909 | O | 1 |
| A2058 | 20.7 | 7.3 | 72.0 | 18.879 | O | 1 |
| A2059 | 20.0 | 8.0 | 72.0 | 18.668 | O | 1 |
| A2060 | 19.0 | 9.0 | 72.0 | 18.368 | O | 1 |
| A2061 | 18.0 | 10.0 | 72.0 | 18.067 | O | 1 |
| A2062 | 17.0 | 11.0 | 72.0 | 17.766 | O | 1 |
| A2063 | 16.0 | 12.0 | 72.0 | 17.465 | O | 1 |
| A2064 | 15.0 | 13.0 | 72.0 | 17.164 | O | 1 |
| A2065 | 14.0 | 14.0 | 72.0 | 16.864 | O | 1 |
| A2066 | 13.0 | 15.0 | 72.0 | 16.563 | O | 1 |

[Table 255]

| A2067 | 12.0 | 16.0 | 72.0 | 16.262 | O | 1 |
|-------|------|------|------|--------|---|---|
| A2068 | 11.0 | 17.0 | 72.0 | 15.961 | O | 1 |
| A2069 | 10.0 | 18.0 | 72.0 | 15.660 | O | 1 |
| A2070 | 9.0 | 19.0 | 72.0 | 15.359 | O | 1 |
| A2071 | 8.0 | 20.0 | 72.0 | 15.059 | O | 1 |
| A2072 | 7.0 | 21.0 | 72.0 | 14.758 | O | 1 |
| A2073 | 6.0 | 22.0 | 72.0 | 14.405 | O | 1 |
| A2074 | 5.0 | 23.0 | 72.0 | 14.050 | O | 1 |
| A2075 | 4.0 | 24.0 | 72.0 | 13.696 | O | 1 |
| A2076 | 3.0 | 25.0 | 72.0 | 13.341 | O | 1 |
| A2077 | 2.0 | 26.0 | 72.0 | 12.986 | O | 1 |
| A2078 | 1.0 | 27.0 | 72.0 | 12.632 | O | 1 |
| A2079 | 0.0 | 28.0 | 72.0 | 12.277 | O | 1 |
| A2080 | 23.0 | 4.0 | 73.0 | 19.521 | X | 1 |
| A2081 | 22.0 | 5.0 | 73.0 | 19.220 | X | 1 |
| A2082 | 21.3 | 5.7 | 73.0 | 19.010 | X | 1 |
| A2083 | 21.2 | 5.8 | 73.0 | 18.980 | O | 1 |
| A2084 | 21.0 | 6.0 | 73.0 | 18.919 | O | 1 |
| A2085 | 20.0 | 7.0 | 73.0 | 18.619 | O | 1 |
| A2086 | 19.0 | 8.0 | 73.0 | 18.318 | O | 1 |
| A2087 | 18.0 | 9.0 | 73.0 | 18.017 | O | 1 |
| A2088 | 17.0 | 10.0 | 73.0 | 17.716 | O | 1 |
| A2089 | 16.0 | 11.0 | 73.0 | 17.415 | O | 1 |
| A2090 | 15.0 | 12.0 | 73.0 | 17.114 | O | 1 |
| A2091 | 14.0 | 13.0 | 73.0 | 16.814 | O | 1 |
| A2092 | 13.0 | 14.0 | 73.0 | 16.513 | O | 1 |
| A2093 | 12.0 | 15.0 | 73.0 | 16.212 | O | 1 |
| A2094 | 11.0 | 16.0 | 73.0 | 15.911 | O | 1 |
| A2095 | 10.0 | 17.0 | 73.0 | 15.610 | O | 1 |
| A2096 | 9.0 | 18.0 | 73.0 | 15.309 | O | 1 |
| A2097 | 8.0 | 19.0 | 73.0 | 15.009 | O | 1 |
| A2098 | 7.0 | 20.0 | 73.0 | 14.705 | O | 1 |
| A2099 | 6.0 | 21.0 | 73.0 | 14.350 | O | 1 |
| A2100 | 5.0 | 22.0 | 73.0 | 13.995 | O | 1 |
| A2101 | 4.0 | 23.0 | 73.0 | 13.641 | O | 1 |
| A2102 | 3.0 | 24.0 | 73.0 | 13.286 | O | 1 |
| A2103 | 2.0 | 25.0 | 73.0 | 12.931 | O | 1 |
| A2104 | 1.0 | 26.0 | 73.0 | 12.576 | O | 1 |
| A2105 | 0.0 | 27.0 | 73.0 | 12.222 | O | 1 |
| A2106 | 22.0 | 4.0 | 74.0 | 19.170 | X | 1 |
| A2107 | 21.5 | 4.5 | 74.0 | 19.020 | X | 1 |
| A2108 | 21.4 | 4.6 | 74.0 | 18.990 | O | 1 |
| A2109 | 21.0 | 5.0 | 74.0 | 18.869 | O | 1 |
| A2110 | 20.0 | 6.0 | 74.0 | 18.569 | O | 1 |
| A2111 | 19.0 | 7.0 | 74.0 | 18.268 | O | 1 |
| A2112 | 18.0 | 8.0 | 74.0 | 17.967 | O | 1 |
| A2113 | 17.0 | 9.0 | 74.0 | 17.666 | O | 1 |
| A2114 | 16.0 | 10.0 | 74.0 | 17.365 | O | 1 |
| A2115 | 15.0 | 11.0 | 74.0 | 17.064 | O | 1 |
| A2116 | 14.0 | 12.0 | 74.0 | 16.764 | O | 1 |

[Table 256]

274

| | | | | | | |
|---|---|---|---|---|---|---|
| A2117 | 13.0 | 13.0 | 74.0 | 16.463 | O | 1 |
| A2118 | 12.0 | 14.0 | 74.0 | 16.162 | O | 1 |
| A2119 | 11.0 | 15.0 | 74.0 | 15.861 | O | 1 |
| A2120 | 10.0 | 16.0 | 74.0 | 15.560 | O | 1 |
| A2121 | 9.0 | 17.0 | 74.0 | 15.259 | O | 1 |
| A2122 | 8.0 | 18.0 | 74.0 | 14.959 | O | 1 |
| A2123 | 7.0 | 19.0 | 74.0 | 14.649 | O | 1 |
| A2124 | 6.0 | 20.0 | 74.0 | 14.295 | O | 1 |
| A2125 | 5.0 | 21.0 | 74.0 | 13.940 | O | 1 |
| A2126 | 4.0 | 22.0 | 74.0 | 13.585 | O | 1 |
| A2127 | 3.0 | 23.0 | 74.0 | 13.231 | O | 1 |
| A2128 | 2.0 | 24.0 | 74.0 | 12.876 | O | 1 |
| A2129 | 1.0 | 25.0 | 74.0 | 12.521 | O | 1 |
| A2130 | 0.0 | 26.0 | 74.0 | 12.167 | O | 1 |
| A2131 | 22.0 | 3.0 | 75.0 | 19.120 | X | 1 |
| A2132 | 21.6 | 3.4 | 75.0 | 19.000 | **X** | 1 |
| A2133 | 21.5 | 3.5 | 75.0 | 18.970 | O | 1 |
| A2134 | 21.0 | 4.0 | 75.0 | 18.819 | O | 1 |
| A2135 | 20.0 | 5.0 | 75.0 | 18.519 | O | 1 |
| A2136 | 19.0 | 6.0 | 75.0 | 18.218 | O | 1 |
| A2137 | 18.0 | 7.0 | 75.0 | 17.917 | O | 1 |
| A2138 | 17.0 | 8.0 | 75.0 | 17.616 | O | 1 |
| A2139 | 16.0 | 9.0 | 75.0 | 17.315 | O | 1 |
| A2140 | 15.0 | 10.0 | 75.0 | 17.014 | O | 1 |
| A2141 | 14.0 | 11.0 | 75.0 | 16.714 | O | 1 |
| A2142 | 13.0 | 12.0 | 75.0 | 16.413 | O | 1 |
| A2143 | 12.0 | 13.0 | 75.0 | 16.112 | O | 1 |
| A2144 | 11.0 | 14.0 | 75.0 | 15.811 | O | 1 |
| A2145 | 10.0 | 15.0 | 75.0 | 15.510 | O | 1 |
| A2146 | 9.0 | 16.0 | 75.0 | 15.209 | O | 1 |
| A2147 | 8.0 | 17.0 | 75.0 | 14.909 | O | 1 |
| A2148 | 7.0 | 18.0 | 75.0 | 14.594 | O | 1 |
| A2149 | 6.0 | 19.0 | 75.0 | 14.240 | O | 1 |
| A2150 | 5.0 | 20.0 | 75.0 | 13.885 | O | 1 |
| A2151 | 4.0 | 21.0 | 75.0 | 13.530 | O | 1 |
| A2152 | 3.0 | 22.0 | 75.0 | 13.175 | O | 1 |
| A2153 | 2.0 | 23.0 | 75.0 | 12.821 | O | 1 |
| A2154 | 1.0 | 24.0 | 75.0 | 12.466 | O | 1 |
| A2155 | 0.0 | 25.0 | 75.0 | 12.111 | O | 1 |
| A2156 | 22.0 | 2.0 | 76.0 | 19.070 | X | 1 |
| A2157 | 21.5 | 2.5 | 76.0 | 18.920 | O | 1 |
| A2158 | 21.4 | 2.6 | 76.0 | 18.890 | O | 1 |
| A2159 | 21.0 | 3.0 | 76.0 | 18.769 | O | 1 |
| A2160 | 20.0 | 4.0 | 76.0 | 18.469 | O | 1 |
| A2161 | 19.0 | 5.0 | 76.0 | 18.168 | O | 1 |
| A2162 | 18.0 | 6.0 | 76.0 | 17.867 | O | 1 |
| A2163 | 17.0 | 7.0 | 76.0 | 17.566 | O | 1 |
| A2164 | 16.0 | 8.0 | 76.0 | 17.265 | O | 1 |
| A2165 | 15.0 | 9.0 | 76.0 | 16.964 | O | 1 |
| A2166 | 14.0 | 10.0 | 76.0 | 16.664 | O | 1 |

[Table 257]

| | | | | | | |
|---|---|---|---|---|---|---|
| A2167 | 13.0 | 11.0 | 76.0 | 16.363 | O | 1 |
| A2168 | 12.0 | 12.0 | 76.0 | 16.062 | O | 1 |
| A2169 | 11.0 | 13.0 | 76.0 | 15.761 | O | 1 |
| A2170 | 10.0 | 14.0 | 76.0 | 15.460 | O | 1 |
| A2171 | 9.0 | 15.0 | 76.0 | 15.159 | O | 1 |
| A2172 | 8.0 | 16.0 | 76.0 | 14.859 | O | 1 |
| A2173 | 7.0 | 17.0 | 76.0 | 14.539 | O | 1 |
| A2174 | 6.0 | 18.0 | 76.0 | 14.184 | O | 1 |
| A2175 | 5.0 | 19.0 | 76.0 | 13.830 | O | 1 |
| A2176 | 4.0 | 20.0 | 76.0 | 13.475 | O | 1 |
| A2177 | 3.0 | 21.0 | 76.0 | 13.120 | O | 1 |
| A2178 | 2.0 | 22.0 | 76.0 | 12.766 | O | 1 |
| A2179 | 1.0 | 23.0 | 76.0 | 12.411 | O | 1 |
| A2180 | 0.0 | 24.0 | 76.0 | 12.056 | O | 1 |
| A2181 | 15.0 | 8.0 | 77.0 | 16.914 | O | 1 |
| A2182 | 22.2 | 0.0 | 77.8 | 19.040 | X | 1 |
| A2183 | 22.1 | 0.0 | 77.9 | 19.005 | X | 1 |
| A2184 | 22.0 | 0.0 | 78.0 | 18.970 | O | 1 |
| A2185 | 10.0 | 12.0 | 78.0 | 15.360 | O | 1 |
| A2186 | 21.0 | 0.0 | 79.0 | 18.619 | O | 1 |
| A2187 | 5.0 | 16.0 | 79.0 | 13.664 | O | 1 |
| A2188 | 20.0 | 0.0 | 80.0 | 18.269 | O | 1 |
| A2189 | 0.0 | 20.0 | 80.0 | 11.835 | O | 1 |
| A2190 | 19.0 | 0.0 | 81.0 | 17.918 | O | 1 |
| A2191 | 15.0 | 4.0 | 81.0 | 16.714 | O | 1 |
| A2192 | 18.0 | 0.0 | 82.0 | 17.567 | O | 1 |
| A2193 | 10.0 | 8.0 | 82.0 | 15.160 | O | 1 |
| A2194 | 17.0 | 0.0 | 83.0 | 17.216 | O | 1 |
| A2195 | 5.0 | 12.0 | 83.0 | 13.443 | O | 1 |
| A2196 | 16.0 | 0.0 | 84.0 | 16.865 | O | 1 |
| A2197 | 0.0 | 16.0 | 84.0 | 11.615 | O | 1 |
| A2198 | 14.0 | 0.0 | 86.0 | 16.164 | O | 1 |
| A2199 | 10.0 | 4.0 | 86.0 | 14.960 | O | 1 |
| A2200 | 13.0 | 0.0 | 87.0 | 15.813 | O | 1 |
| A2201 | 5.0 | 8.0 | 87.0 | 13.223 | O | 1 |
| A2202 | 12.0 | 0.0 | 88.0 | 15.462 | O | 1 |
| A2203 | 0.0 | 12.0 | 88.0 | 11.394 | O | 1 |
| A2204 | 9.0 | 0.0 | 91.0 | 14.410 | O | 1 |
| A2205 | 5.0 | 4.0 | 91.0 | 13.002 | O | 1 |
| A2206 | 8.0 | 0.0 | 92.0 | 14.011 | O | 1 |
| A2207 | 0.0 | 8.0 | 92.0 | 11.173 | O | 1 |
| A2208 | 4.0 | 0.0 | 96.0 | 12.371 | O | 1 |
| A2209 | 0.0 | 4.0 | 96.0 | 10.952 | O | 1 |

Tables 258 to 263 show the composition, combustion heat amount, and GWP of the working medium of a three-component system of propane, HFO-1132(E), and HFO-1234ze(E).

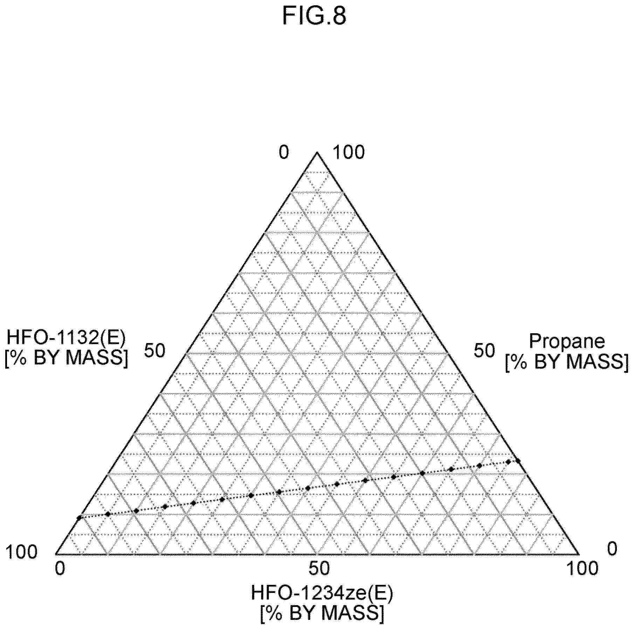

Fig. 8 shows a triangular diagram of a three-component system of propane, HFO-1132(E), and HFO-1234ze(E). Fig. 8 shows a straight line connecting (9.1, 90.9, 0.0) and (23.3, 0.0, 76.7) by (propane, HFO-1132(E), HFO-1234ze(E)). A region including this straight line and having a low propane concentration indicates a region where the combustion heat amount for the three-component system of propane, HFO-1132(E), and HFO-1234ze(E) is less than 19.000 MJ/kg, and a region having a higher propane concentration than the straight line indicates a region where the combustion heat amount for the three-component system of propane, HFO-1132(E), and HFO-1234ze(E) is 19.000 MJ/kg or more.

The straight line in Fig. 8 is also expressed as follows:

in the case of (Propane, HFO-1132(E), HFO-1234ze(E)) = (X, Y, Z),
(X, Y, Z) = (-0.156020Y + 23.3, Y, 76.7 - 0.84398Y)
※ Y ≤ 90.9.

[Table 258]

| Case | propane | HFO-1132(E) | HFO-1234ze(E) | Heat of Combustion | Evaluation | GWP |
|------|---------|-------------|---------------|--------------------|------------|-----|
| A2210 | 11.0 | 84.0 | 5.0 | 19.281 | X | 1 |
| A2211 | 10.1 | 84.9 | 5.0 | 19.010 | X | 1 |
| A2212 | 10.0 | 85.0 | 5.0 | 18.980 | O | 1 |
| A2213 | 9.0 | 86.0 | 5.0 | 18.679 | O | 1 |
| A2214 | 8.0 | 87.0 | 5.0 | 18.378 | O | 1 |
| A2215 | 7.0 | 88.0 | 5.0 | 18.077 | O | 1 |
| A2216 | 6.0 | 89.0 | 5.0 | 17.776 | O | 1 |
| A2217 | 5.0 | 90.0 | 5.0 | 17.476 | O | 1 |
| A2218 | 4.0 | 91.0 | 5.0 | 17.175 | O | 1 |
| A2219 | 3.0 | 92.0 | 5.0 | 16.874 | O | 1 |
| A2220 | 2.0 | 93.0 | 5.0 | 16.573 | O | 1 |
| A2221 | 1.0 | 94.0 | 5.0 | 16.272 | O | 1 |
| A2222 | 0.0 | 95.0 | 5.0 | 15.945 | O | 1 |
| A2223 | 11.0 | 79.0 | 10.0 | 19.001 | X | 1 |
| A2224 | 10.9 | 79.1 | 10.0 | 18.971 | O | 1 |
| A2225 | 10.0 | 80.0 | 10.0 | 18.700 | O | 1 |
| A2226 | 9.0 | 81.0 | 10.0 | 18.399 | O | 1 |
| A2227 | 8.0 | 82.0 | 10.0 | 18.098 | O | 1 |
| A2228 | 7.0 | 83.0 | 10.0 | 17.798 | O | 1 |
| A2229 | 6.0 | 84.0 | 10.0 | 17.497 | O | 1 |
| A2230 | 5.0 | 85.0 | 10.0 | 17.196 | O | 1 |
| A2231 | 4.0 | 86.0 | 10.0 | 16.895 | O | 1 |
| A2232 | 3.0 | 87.0 | 10.0 | 16.594 | O | 1 |
| A2233 | 2.0 | 88.0 | 10.0 | 16.293 | O | 1 |
| A2234 | 1.0 | 89.0 | 10.0 | 15.993 | O | 1 |
| A2235 | 0.0 | 90.0 | 10.0 | 15.640 | O | 1 |
| A2236 | 12.0 | 73.0 | 15.0 | 19.022 | X | 1 |
| A2237 | 11.9 | 73.1 | 15.0 | 18.992 | O | 1 |
| A2238 | 11.0 | 74.0 | 15.0 | 18.721 | O | 1 |
| A2239 | 10.0 | 75.0 | 15.0 | 18.421 | O | 1 |
| A2240 | 9.0 | 76.0 | 15.0 | 18.120 | O | 1 |
| A2241 | 8.0 | 77.0 | 15.0 | 17.819 | O | 1 |
| A2242 | 7.0 | 78.0 | 15.0 | 17.518 | O | 1 |
| A2243 | 6.0 | 79.0 | 15.0 | 17.217 | O | 1 |
| A2244 | 5.0 | 80.0 | 15.0 | 16.916 | O | 1 |
| A2245 | 4.0 | 81.0 | 15.0 | 16.616 | O | 1 |
| A2246 | 3.0 | 82.0 | 15.0 | 16.315 | O | 1 |
| A2247 | 2.0 | 83.0 | 15.0 | 16.014 | O | 1 |
| A2248 | 1.0 | 84.0 | 15.0 | 15.689 | O | 1 |
| A2249 | 0.0 | 85.0 | 15.0 | 15.334 | O | 1 |
| A2250 | 13.0 | 67.0 | 20.0 | 19.043 | X | 1 |
| A2251 | 12.9 | 67.1 | 20.0 | 19.013 | X | 1 |
| A2252 | 12.8 | 67.2 | 20.0 | 18.983 | O | 1 |
| A2253 | 12.0 | 68.0 | 20.0 | 18.743 | O | 1 |
| A2254 | 11.0 | 69.0 | 20.0 | 18.442 | O | 1 |
| A2255 | 10.0 | 70.0 | 20.0 | 18.141 | O | 1 |
| A2256 | 9.0 | 71.0 | 20.0 | 17.840 | O | 1 |
| A2257 | 8.0 | 72.0 | 20.0 | 17.539 | O | 1 |
| A2258 | 7.0 | 73.0 | 20.0 | 17.238 | O | 1 |
| A2259 | 6.0 | 74.0 | 20.0 | 16.938 | O | 1 |

EP 4 442 787 A1

[Table 259]

| A2260 | 5.0 | 75.0 | 20.0 | 16.637 | O | 1 |
|---|---|---|---|---|---|---|
| A2261 | 4.0 | 76.0 | 20.0 | 16.336 | O | 1 |
| A2262 | 3.0 | 77.0 | 20.0 | 16.035 | O | 1 |
| A2263 | 2.0 | 78.0 | 20.0 | 15.734 | O | 1 |
| A2264 | 1.0 | 79.0 | 20.0 | 15.383 | O | 1 |
| A2265 | 0.0 | 80.0 | 20.0 | 15.028 | O | 1 |
| A2266 | 14.0 | 61.0 | 25.0 | 19.065 | X | 1 |
| A2267 | 13.8 | 61.2 | 25.0 | 19.004 | X | 1 |
| A2268 | 13.7 | 61.3 | 25.0 | 18.974 | O | 1 |
| A2269 | 13.0 | 62.0 | 25.0 | 18.764 | O | 1 |
| A2270 | 12.0 | 63.0 | 25.0 | 18.463 | O | 1 |
| A2271 | 11.0 | 64.0 | 25.0 | 18.162 | O | 1 |
| A2272 | 10.0 | 65.0 | 25.0 | 17.861 | O | 1 |
| A2273 | 9.0 | 66.0 | 25.0 | 17.560 | O | 1 |
| A2274 | 8.0 | 67.0 | 25.0 | 17.260 | O | 1 |
| A2275 | 7.0 | 68.0 | 25.0 | 16.959 | O | 1 |
| A2276 | 6.0 | 69.0 | 25.0 | 16.658 | O | 1 |
| A2277 | 5.0 | 70.0 | 25.0 | 16.357 | O | 1 |
| A2278 | 4.0 | 71.0 | 25.0 | 16.056 | O | 1 |
| A2279 | 3.0 | 72.0 | 25.0 | 15.755 | O | 1 |
| A2280 | 2.0 | 73.0 | 25.0 | 15.432 | O | 1 |
| A2281 | 1.0 | 74.0 | 25.0 | 15.077 | O | 1 |
| A2282 | 0.0 | 75.0 | 25.0 | 14.723 | O | 1 |
| A2283 | 15.0 | 55.0 | 30.0 | 19.086 | X | 1 |
| A2284 | 14.8 | 55.2 | 30.0 | 19.026 | X | 1 |
| A2285 | 14.7 | 55.3 | 30.0 | 18.996 | O | 1 |
| A2286 | 14.0 | 56.0 | 30.0 | 18.785 | O | 1 |
| A2287 | 13.0 | 57.0 | 30.0 | 18.484 | O | 1 |
| A2288 | 12.0 | 58.0 | 30.0 | 18.183 | O | 1 |
| A2289 | 11.0 | 59.0 | 30.0 | 17.882 | O | 1 |
| A2290 | 10.0 | 60.0 | 30.0 | 17.582 | O | 1 |
| A2291 | 9.0 | 61.0 | 30.0 | 17.281 | O | 1 |
| A2292 | 8.0 | 62.0 | 30.0 | 16.980 | O | 1 |
| A2293 | 7.0 | 63.0 | 30.0 | 16.679 | O | 1 |
| A2294 | 6.0 | 64.0 | 30.0 | 16.378 | O | 1 |
| A2295 | 5.0 | 65.0 | 30.0 | 16.077 | O | 1 |
| A2296 | 4.0 | 66.0 | 30.0 | 15.777 | O | 1 |
| A2297 | 3.0 | 67.0 | 30.0 | 15.476 | O | 1 |
| A2298 | 2.0 | 68.0 | 30.0 | 15.127 | O | 1 |
| A2299 | 1.0 | 69.0 | 30.0 | 14.772 | O | 1 |
| A2300 | 0.0 | 70.0 | 30.0 | 14.417 | O | 1 |
| A2301 | 16.0 | 49.0 | 35.0 | 19.107 | X | 1 |
| A2302 | 15.7 | 49.3 | 35.0 | 19.017 | X | 1 |
| A2303 | 15.6 | 49.4 | 35.0 | 18.987 | O | 1 |
| A2304 | 15.0 | 50.0 | 35.0 | 18.806 | O | 1 |
| A2305 | 14.0 | 51.0 | 35.0 | 18.505 | O | 1 |
| A2306 | 13.0 | 52.0 | 35.0 | 18.204 | O | 1 |
| A2307 | 12.0 | 53.0 | 35.0 | 17.904 | O | 1 |
| A2308 | 11.0 | 54.0 | 35.0 | 17.603 | O | 1 |
| A2309 | 10.0 | 55.0 | 35.0 | 17.302 | O | 1 |

[Table 260]

| A2310 | 9.0 | 56.0 | 35.0 | 17.001 | O | 1 |
|---|---|---|---|---|---|---|
| A2311 | 8.0 | 57.0 | 35.0 | 16.700 | O | 1 |
| A2312 | 7.0 | 58.0 | 35.0 | 16.400 | O | 1 |
| A2313 | 6.0 | 59.0 | 35.0 | 16.099 | O | 1 |
| A2314 | 5.0 | 60.0 | 35.0 | 15.798 | O | 1 |
| A2315 | 4.0 | 61.0 | 35.0 | 15.497 | O | 1 |
| A2316 | 3.0 | 62.0 | 35.0 | 15.176 | O | 1 |
| A2317 | 2.0 | 63.0 | 35.0 | 14.821 | O | 1 |
| A2318 | 1.0 | 64.0 | 35.0 | 14.466 | O | 1 |
| A2319 | 0.0 | 65.0 | 35.0 | 14.111 | O | 1 |
| A2320 | 17.0 | 43.0 | 40.0 | 19.128 | X | 1 |
| A2321 | 16.6 | 43.4 | 40.0 | 19.008 | X | 1 |
| A2322 | 16.5 | 43.5 | 40.0 | 18.978 | O | 1 |
| A2323 | 16.0 | 44.0 | 40.0 | 18.827 | O | 1 |
| A2324 | 15.0 | 45.0 | 40.0 | 18.527 | O | 1 |
| A2325 | 14.0 | 46.0 | 40.0 | 18.226 | O | 1 |
| A2326 | 13.0 | 47.0 | 40.0 | 17.925 | O | 1 |
| A2327 | 12.0 | 48.0 | 40.0 | 17.624 | O | 1 |
| A2328 | 11.0 | 49.0 | 40.0 | 17.323 | O | 1 |
| A2329 | 10.0 | 50.0 | 40.0 | 17.022 | O | 1 |
| A2330 | 9.0 | 51.0 | 40.0 | 16.722 | O | 1 |
| A2331 | 8.0 | 52.0 | 40.0 | 16.421 | O | 1 |
| A2332 | 7.0 | 53.0 | 40.0 | 16.120 | O | 1 |
| A2333 | 6.0 | 54.0 | 40.0 | 15.819 | O | 1 |
| A2334 | 5.0 | 55.0 | 40.0 | 15.518 | O | 1 |
| A2335 | 4.0 | 56.0 | 40.0 | 15.217 | O | 1 |
| A2336 | 3.0 | 57.0 | 40.0 | 14.870 | O | 1 |
| A2337 | 2.0 | 58.0 | 40.0 | 14.515 | O | 1 |
| A2338 | 1.0 | 59.0 | 40.0 | 14.160 | O | 1 |
| A2339 | 0.0 | 60.0 | 40.0 | 13.806 | O | 1 |
| A2340 | 18.0 | 37.0 | 45.0 | 19.149 | X | 1 |
| A2341 | 17.6 | 37.4 | 45.0 | 19.029 | X | 1 |
| A2342 | 17.5 | 37.5 | 45.0 | 18.999 | O | 1 |
| A2343 | 17.0 | 38.0 | 45.0 | 18.849 | O | 1 |
| A2344 | 16.0 | 39.0 | 45.0 | 18.548 | O | 1 |
| A2345 | 15.0 | 40.0 | 45.0 | 18.247 | O | 1 |
| A2346 | 14.0 | 41.0 | 45.0 | 17.946 | O | 1 |
| A2347 | 13.0 | 42.0 | 45.0 | 17.645 | O | 1 |
| A2348 | 12.0 | 43.0 | 45.0 | 17.344 | O | 1 |
| A2349 | 11.0 | 44.0 | 45.0 | 17.044 | O | 1 |
| A2350 | 10.0 | 45.0 | 45.0 | 16.743 | O | 1 |
| A2351 | 9.0 | 46.0 | 45.0 | 16.442 | O | 1 |
| A2352 | 8.0 | 47.0 | 45.0 | 16.141 | O | 1 |
| A2353 | 7.0 | 48.0 | 45.0 | 15.840 | O | 1 |
| A2354 | 6.0 | 49.0 | 45.0 | 15.539 | O | 1 |
| A2355 | 5.0 | 50.0 | 45.0 | 15.239 | O | 1 |
| A2356 | 4.0 | 51.0 | 45.0 | 14.919 | O | 1 |
| A2357 | 3.0 | 52.0 | 45.0 | 14.564 | O | 1 |
| A2358 | 2.0 | 53.0 | 45.0 | 14.210 | O | 1 |
| A2359 | 1.0 | 54.0 | 45.0 | 13.855 | O | 1 |

[Table 261]

| A2360 | 0.0 | 55.0 | 45.0 | 13.500 | O | 1 |
|---|---|---|---|---|---|---|
| A2361 | 19.0 | 31.0 | 50.0 | 19.171 | X | 1 |
| A2362 | 18.5 | 31.5 | 50.0 | 19.020 | X | 1 |
| A2363 | 18.4 | 31.6 | 50.0 | 18.990 | O | 1 |
| A2364 | 18.0 | 32.0 | 50.0 | 18.870 | O | 1 |
| A2365 | 17.0 | 33.0 | 50.0 | 18.569 | O | 1 |
| A2366 | 16.0 | 34.0 | 50.0 | 18.268 | O | 1 |
| A2367 | 15.0 | 35.0 | 50.0 | 17.967 | O | 1 |
| A2368 | 14.0 | 36.0 | 50.0 | 17.666 | O | 1 |
| A2369 | 13.0 | 37.0 | 50.0 | 17.366 | O | 1 |
| A2370 | 12.0 | 38.0 | 50.0 | 17.065 | O | 1 |
| A2371 | 11.0 | 39.0 | 50.0 | 16.764 | O | 1 |
| A2372 | 10.0 | 40.0 | 50.0 | 16.463 | O | 1 |
| A2373 | 9.0 | 41.0 | 50.0 | 16.162 | O | 1 |
| A2374 | 8.0 | 42.0 | 50.0 | 15.861 | O | 1 |
| A2375 | 7.0 | 43.0 | 50.0 | 15.561 | O | 1 |
| A2376 | 6.0 | 44.0 | 50.0 | 15.260 | O | 1 |
| A2377 | 5.0 | 45.0 | 50.0 | 14.959 | O | 1 |
| A2378 | 4.0 | 46.0 | 50.0 | 14.613 | O | 1 |
| A2379 | 3.0 | 47.0 | 50.0 | 14.259 | O | 1 |
| A2380 | 2.0 | 48.0 | 50.0 | 13.904 | O | 1 |
| A2381 | 1.0 | 49.0 | 50.0 | 13.549 | O | 1 |
| A2382 | 0.0 | 50.0 | 50.0 | 13.194 | O | 1 |
| A2383 | 20.0 | 25.0 | 55.0 | 19.192 | X | 1 |
| A2384 | 19.4 | 25.6 | 55.0 | 19.011 | X | 1 |
| A2385 | 19.3 | 25.7 | 55.0 | 18.981 | O | 1 |
| A2386 | 19.0 | 26.0 | 55.0 | 18.891 | O | 1 |
| A2387 | 18.0 | 27.0 | 55.0 | 18.590 | O | 1 |
| A2388 | 17.0 | 28.0 | 55.0 | 18.289 | O | 1 |
| A2389 | 16.0 | 29.0 | 55.0 | 17.988 | O | 1 |
| A2390 | 15.0 | 30.0 | 55.0 | 17.688 | O | 1 |
| A2391 | 14.0 | 31.0 | 55.0 | 17.387 | O | 1 |
| A2392 | 13.0 | 32.0 | 55.0 | 17.086 | O | 1 |
| A2393 | 12.0 | 33.0 | 55.0 | 16.785 | O | 1 |
| A2394 | 11.0 | 34.0 | 55.0 | 16.484 | O | 1 |
| A2395 | 10.0 | 35.0 | 55.0 | 16.183 | O | 1 |
| A2396 | 9.0 | 36.0 | 55.0 | 15.883 | O | 1 |
| A2397 | 8.0 | 37.0 | 55.0 | 15.582 | O | 1 |
| A2398 | 7.0 | 38.0 | 55.0 | 15.281 | O | 1 |
| A2399 | 6.0 | 39.0 | 55.0 | 14.980 | O | 1 |
| A2400 | 5.0 | 40.0 | 55.0 | 14.662 | O | 1 |
| A2401 | 4.0 | 41.0 | 55.0 | 14.308 | O | 1 |
| A2402 | 3.0 | 42.0 | 55.0 | 13.953 | O | 1 |
| A2403 | 2.0 | 43.0 | 55.0 | 13.598 | O | 1 |
| A2404 | 1.0 | 44.0 | 55.0 | 13.244 | O | 1 |
| A2405 | 0.0 | 45.0 | 55.0 | 12.889 | O | 1 |
| A2406 | 21.0 | 19.0 | 60.0 | 19.213 | X | 1 |
| A2407 | 20.3 | 19.7 | 60.0 | 19.002 | X | 1 |
| A2408 | 20.2 | 19.8 | 60.0 | 18.972 | O | 1 |
| A2409 | 20.0 | 20.0 | 60.0 | 18.912 | O | 1 |

[Table 262]

| A2410 | 19.0 | 21.0 | 60.0 | 18.611 | O | 1 |
|---|---|---|---|---|---|---|
| A2411 | 18.0 | 22.0 | 60.0 | 18.311 | O | 1 |
| A2412 | 17.0 | 23.0 | 60.0 | 18.010 | O | 1 |
| A2413 | 16.0 | 24.0 | 60.0 | 17.709 | O | 1 |
| A2414 | 15.0 | 25.0 | 60.0 | 17.408 | O | 1 |
| A2415 | 14.0 | 26.0 | 60.0 | 17.107 | O | 1 |
| A2416 | 13.0 | 27.0 | 60.0 | 16.806 | O | 1 |
| A2417 | 12.0 | 28.0 | 60.0 | 16.506 | O | 1 |
| A2418 | 11.0 | 29.0 | 60.0 | 16.205 | O | 1 |
| A2419 | 10.0 | 30.0 | 60.0 | 15.904 | O | 1 |
| A2420 | 9.0 | 31.0 | 60.0 | 15.603 | O | 1 |
| A2421 | 8.0 | 32.0 | 60.0 | 15.302 | O | 1 |
| A2422 | 7.0 | 33.0 | 60.0 | 15.001 | O | 1 |
| A2423 | 6.0 | 34.0 | 60.0 | 14.701 | O | 1 |
| A2424 | 5.0 | 35.0 | 60.0 | 14.357 | O | 1 |
| A2425 | 4.0 | 36.0 | 60.0 | 14.002 | O | 1 |
| A2426 | 3.0 | 37.0 | 60.0 | 13.647 | O | 1 |
| A2427 | 2.0 | 38.0 | 60.0 | 13.293 | O | 1 |
| A2428 | 1.0 | 39.0 | 60.0 | 12.938 | O | 1 |
| A2429 | 0.0 | 40.0 | 60.0 | 12.583 | O | 1 |
| A2430 | 22.0 | 13.0 | 65.0 | 19.234 | X | 1 |
| A2431 | 21.3 | 13.7 | 65.0 | 19.024 | X | 1 |
| A2432 | 21.2 | 13.8 | 65.0 | 18.994 | O | 1 |
| A2433 | 21.0 | 14.0 | 65.0 | 18.933 | O | 1 |
| A2434 | 20.0 | 15.0 | 65.0 | 18.633 | O | 1 |
| A2435 | 21.0 | 14.0 | 65.0 | 18.933 | O | 1 |
| A2436 | 20.0 | 15.0 | 65.0 | 18.633 | O | 1 |
| A2437 | 19.0 | 16.0 | 65.0 | 18.332 | O | 1 |
| A2438 | 18.0 | 17.0 | 65.0 | 18.031 | O | 1 |
| A2439 | 17.0 | 18.0 | 65.0 | 17.730 | O | 1 |
| A2440 | 16.0 | 19.0 | 65.0 | 17.429 | O | 1 |
| A2441 | 15.0 | 20.0 | 65.0 | 17.128 | O | 1 |
| A2442 | 14.0 | 21.0 | 65.0 | 16.828 | O | 1 |
| A2443 | 13.0 | 22.0 | 65.0 | 16.527 | O | 1 |
| A2444 | 12.0 | 23.0 | 65.0 | 16.226 | O | 1 |
| A2445 | 11.0 | 24.0 | 65.0 | 15.925 | O | 1 |
| A2446 | 10.0 | 25.0 | 65.0 | 15.624 | O | 1 |
| A2447 | 9.0 | 26.0 | 65.0 | 15.323 | O | 1 |
| A2448 | 8.0 | 27.0 | 65.0 | 15.023 | O | 1 |
| A2449 | 7.0 | 28.0 | 65.0 | 14.722 | O | 1 |
| A2450 | 6.0 | 29.0 | 65.0 | 14.406 | O | 1 |
| A2451 | 5.0 | 30.0 | 65.0 | 14.051 | O | 1 |
| A2452 | 4.0 | 31.0 | 65.0 | 13.696 | O | 1 |
| A2453 | 3.0 | 32.0 | 65.0 | 13.342 | O | 1 |
| A2454 | 2.0 | 33.0 | 65.0 | 12.987 | O | 1 |
| A2455 | 1.0 | 34.0 | 65.0 | 12.632 | O | 1 |
| A2456 | 0.0 | 35.0 | 65.0 | 12.277 | O | 1 |
| A2457 | 23.0 | 7.0 | 70.0 | 19.255 | X | 1 |
| A2458 | 22.2 | 7.8 | 70.0 | 19.015 | X | 1 |
| A2459 | 22.1 | 7.9 | 70.0 | 18.985 | O | 1 |

[Table 263]

| | | | | | | |
|---|---|---|---|---|---|---|
| A2460 | 22.0 | 8.0 | 70.0 | 18.955 | O | 1 |
| A2461 | 21.0 | 9.0 | 70.0 | 18.654 | O | 1 |
| A2462 | 20.0 | 10.0 | 70.0 | 18.353 | O | 1 |
| A2463 | 19.0 | 11.0 | 70.0 | 18.052 | O | 1 |
| A2464 | 18.0 | 12.0 | 70.0 | 17.751 | O | 1 |
| A2465 | 17.0 | 13.0 | 70.0 | 17.450 | O | 1 |
| A2466 | 16.0 | 14.0 | 70.0 | 17.150 | O | 1 |
| A2467 | 15.0 | 15.0 | 70.0 | 16.849 | O | 1 |
| A2468 | 14.0 | 16.0 | 70.0 | 16.548 | O | 1 |
| A2469 | 13.0 | 17.0 | 70.0 | 16.247 | O | 1 |
| A2470 | 12.0 | 18.0 | 70.0 | 15.946 | O | 1 |
| A2471 | 11.0 | 19.0 | 70.0 | 15.645 | O | 1 |
| A2472 | 10.0 | 20.0 | 70.0 | 15.345 | O | 1 |
| A2473 | 9.0 | 21.0 | 70.0 | 15.044 | O | 1 |
| A2474 | 8.0 | 22.0 | 70.0 | 14.743 | O | 1 |
| A2475 | 7.0 | 23.0 | 70.0 | 14.442 | O | 1 |
| A2476 | 6.0 | 24.0 | 70.0 | 14.100 | O | 1 |
| A2477 | 5.0 | 25.0 | 70.0 | 13.745 | O | 1 |
| A2478 | 4.0 | 26.0 | 70.0 | 13.391 | O | 1 |
| A2479 | 3.0 | 27.0 | 70.0 | 13.036 | O | 1 |
| A2480 | 2.0 | 28.0 | 70.0 | 12.681 | O | 1 |
| A2481 | 1.0 | 29.0 | 70.0 | 12.327 | O | 1 |
| A2482 | 0.0 | 30.0 | 70.0 | 11.972 | O | 1 |
| A2483 | 24.0 | 1.0 | 75.0 | 19.277 | X | 1 |
| A2484 | 23.1 | 1.9 | 75.0 | 19.006 | X | 1 |
| A2485 | 23.0 | 2.0 | 75.0 | 18.976 | O | 1 |
| A2486 | 22.0 | 3.0 | 75.0 | 18.675 | O | 1 |
| A2487 | 21.0 | 4.0 | 75.0 | 18.374 | O | 1 |
| A2488 | 20.0 | 5.0 | 75.0 | 18.073 | O | 1 |
| A2489 | 19.0 | 6.0 | 75.0 | 17.772 | O | 1 |
| A2490 | 18.0 | 7.0 | 75.0 | 17.472 | O | 1 |
| A2491 | 17.0 | 8.0 | 75.0 | 17.171 | O | 1 |
| A2492 | 16.0 | 9.0 | 75.0 | 16.870 | O | 1 |
| A2493 | 15.0 | 10.0 | 75.0 | 16.569 | O | 1 |
| A2494 | 14.0 | 11.0 | 75.0 | 16.268 | O | 1 |
| A2495 | 13.0 | 12.0 | 75.0 | 15.967 | O | 1 |
| A2496 | 12.0 | 13.0 | 75.0 | 15.667 | O | 1 |
| A2497 | 11.0 | 14.0 | 75.0 | 15.366 | O | 1 |
| A2498 | 10.0 | 15.0 | 75.0 | 15.065 | O | 1 |
| A2499 | 9.0 | 16.0 | 75.0 | 14.764 | O | 1 |
| A2500 | 8.0 | 17.0 | 75.0 | 14.463 | O | 1 |
| A2501 | 7.0 | 18.0 | 75.0 | 14.149 | O | 1 |
| A2502 | 6.0 | 19.0 | 75.0 | 13.794 | O | 1 |
| A2503 | 5.0 | 20.0 | 75.0 | 13.440 | O | 1 |
| A2504 | 4.0 | 21.0 | 75.0 | 13.085 | O | 1 |
| A2505 | 3.0 | 22.0 | 75.0 | 12.730 | O | 1 |
| A2506 | 2.0 | 23.0 | 75.0 | 12.376 | O | 1 |
| A2507 | 1.0 | 24.0 | 75.0 | 12.021 | O | 1 |
| A2508 | 0.0 | 25.0 | 75.0 | 11.666 | O | 1 |
| A2509 | 23.4 | 0.0 | 76.6 | 19.007 | X | 1 |
| A2510 | 23.3 | 0.0 | 76.7 | 18.971 | O | 1 |
| A2511 | 23.0 | 0.0 | 77.0 | 18.864 | O | 1 |

Tables 264 to 265 show the composition, combustion heat amount, and GWP of the working medium of a three-component system of propane, HFO-1132(E), and HFC-32.

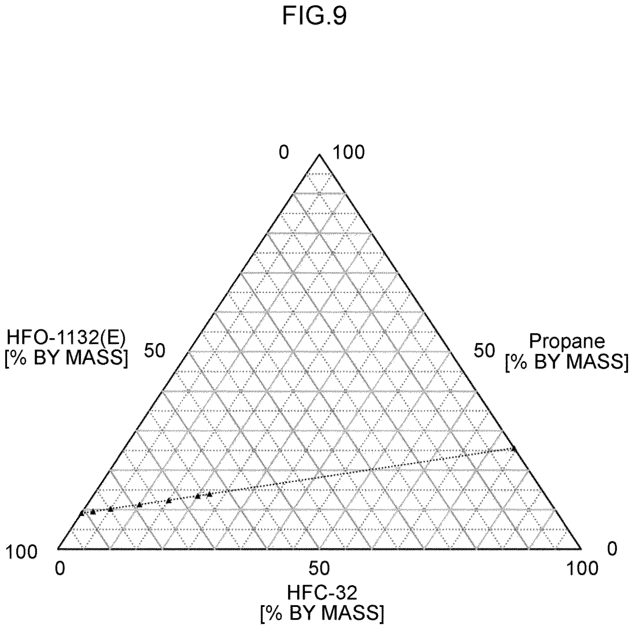

Fig. 9 shows a triangular diagram of a three-component system of propane, HFO-1132(E), and HFC-32. Fig. 9 shows a straight line connecting (9.1, 90.9, 0.0) and (25.6, 0.0, 74.4) by (propane, HFO-1132(E), HFC-32). A region including this straight line and having a low propane concentration indicates a region where the combustion heat amount for the three-component system of propane, HFO-1132(E), and HFC-32 is less than 19.000 MJ/kg, and a region having a higher propane concentration than the straight line indicates a region where the combustion heat amount for the three-component system of propane, HFO-1132(E), and HFC-32 is 19.000 MJ/kg or more.

The straight line in Fig. 9 is also expressed as follows:

in the case of (Propane, HFO-1132(E), HFC-32) = (X, Y, Z),
(X, Y, Z) = (-0.181687Y + 25.6, Y, 74.4 - 0.818313Y)
※ Y ≤ 90.9.

[Table 264]

| Case | propane | HFO-1132(E) | HFC-32 | Heat of Combustion | Evaluation | GWP |
|---|---|---|---|---|---|---|
| A2512 | 10.0 | 88.0 | 2.0 | 19.125 | X | 15 |
| A2513 | 9.6 | 88.4 | 2.0 | 19.005 | X | 15 |
| A2514 | 9.5 | 88.5 | 2.0 | 18.975 | O | 15 |
| A2515 | 9.0 | 89.0 | 2.0 | 18.824 | O | 15 |
| A2516 | 8.0 | 90.0 | 2.0 | 18.524 | O | 15 |
| A2517 | 7.0 | 91.0 | 2.0 | 18.223 | O | 15 |
| A2518 | 6.0 | 92.0 | 2.0 | 17.922 | O | 15 |
| A2519 | 5.0 | 93.0 | 2.0 | 17.621 | O | 15 |
| A2520 | 4.0 | 94.0 | 2.0 | 17.320 | O | 15 |
| A2521 | 3.0 | 95.0 | 2.0 | 17.020 | O | 15 |
| A2522 | 2.0 | 96.0 | 2.0 | 16.719 | O | 15 |
| A2523 | 1.0 | 97.0 | 2.0 | 16.418 | O | 15 |
| A2524 | 0.0 | 98.0 | 2.0 | 16.117 | O | 15 |
| A2525 | 11.0 | 84.0 | 5.0 | 19.225 | X | 35 |
| A2526 | 10.3 | 84.7 | 5.0 | 19.014 | X | 35 |
| A2527 | 10.2 | 84.8 | 5.0 | 18.984 | O | 35 |
| A2528 | 10.0 | 85.0 | 5.0 | 18.924 | O | 35 |
| A2529 | 9.0 | 86.0 | 5.0 | 18.623 | O | 35 |
| A2530 | 8.0 | 87.0 | 5.0 | 18.323 | O | 35 |
| A2531 | 7.0 | 88.0 | 5.0 | 18.022 | O | 35 |
| A2532 | 6.0 | 89.0 | 5.0 | 17.721 | O | 35 |
| A2533 | 5.0 | 90.0 | 5.0 | 17.420 | O | 35 |
| A2534 | 4.0 | 91.0 | 5.0 | 17.119 | O | 35 |
| A2535 | 3.0 | 92.0 | 5.0 | 16.818 | O | 35 |
| A2536 | 2.0 | 93.0 | 5.0 | 16.518 | O | 35 |
| A2537 | 1.0 | 94.0 | 5.0 | 16.217 | O | 35 |
| A2538 | 0.0 | 95.0 | 5.0 | 15.916 | O | 35 |
| A2539 | 12.0 | 78.0 | 10.0 | 19.191 | X | 69 |
| A2540 | 11.4 | 78.6 | 10.0 | 19.010 | X | 69 |
| A2541 | 11.3 | 78.7 | 10.0 | 18.980 | O | 69 |
| A2542 | 11.0 | 79.0 | 10.0 | 18.890 | O | 69 |
| A2543 | 10.0 | 80.0 | 10.0 | 18.589 | O | 69 |
| A2544 | 9.0 | 81.0 | 10.0 | 18.288 | O | 69 |
| A2545 | 8.0 | 82.0 | 10.0 | 17.987 | O | 69 |
| A2546 | 7.0 | 83.0 | 10.0 | 17.687 | O | 69 |
| A2547 | 6.0 | 84.0 | 10.0 | 17.386 | O | 69 |
| A2548 | 5.0 | 85.0 | 10.0 | 17.085 | O | 69 |
| A2549 | 4.0 | 86.0 | 10.0 | 16.784 | O | 69 |
| A2550 | 3.0 | 87.0 | 10.0 | 16.483 | O | 69 |
| A2551 | 2.0 | 88.0 | 10.0 | 16.182 | O | 69 |
| A2552 | 1.0 | 89.0 | 10.0 | 15.882 | O | 69 |
| A2553 | 0.0 | 90.0 | 10.0 | 15.581 | O | 69 |
| A2554 | 13.0 | 72.0 | 15.0 | 19.156 | X | 102 |
| A2555 | 12.5 | 72.5 | 15.0 | 19.006 | X | 102 |
| A2556 | 12.4 | 72.6 | 15.0 | 18.976 | O | 102 |
| A2557 | 12.0 | 73.0 | 15.0 | 18.856 | O | 102 |
| A2558 | 11.0 | 74.0 | 15.0 | 18.555 | O | 102 |
| A2559 | 10.0 | 75.0 | 15.0 | 18.254 | O | 102 |
| A2560 | 9.0 | 76.0 | 15.0 | 17.953 | O | 102 |
| A2561 | 8.0 | 77.0 | 15.0 | 17.652 | O | 102 |

[Table 265]

| A2562 | 7.0 | 78.0 | 15.0 | 17.351 | O | 102 |
|---|---|---|---|---|---|---|
| A2563 | 6.0 | 79.0 | 15.0 | 17.051 | O | 102 |
| A2564 | 5.0 | 80.0 | 15.0 | 16.750 | O | 102 |
| A2565 | 4.0 | 81.0 | 15.0 | 16.449 | O | 102 |
| A2566 | 3.0 | 82.0 | 15.0 | 16.148 | O | 102 |
| A2567 | 2.0 | 83.0 | 15.0 | 15.847 | O | 102 |
| A2568 | 1.0 | 84.0 | 15.0 | 15.546 | O | 102 |
| A2569 | 0.0 | 85.0 | 15.0 | 15.246 | O | 102 |
| A2570 | 14.0 | 66.0 | 20.0 | 19.122 | X | 136 |
| A2571 | 13.6 | 66.4 | 20.0 | 19.002 | X | 136 |
| A2572 | 13.5 | 66.5 | 20.0 | 18.972 | O | 136 |
| A2573 | 13.0 | 67.0 | 20.0 | 18.821 | O | 136 |
| A2574 | 12.0 | 68.0 | 20.0 | 18.520 | O | 136 |
| A2575 | 11.0 | 69.0 | 20.0 | 18.220 | O | 136 |
| A2576 | 10.0 | 70.0 | 20.0 | 17.919 | O | 136 |
| A2577 | 9.0 | 71.0 | 20.0 | 17.618 | O | 136 |
| A2578 | 8.0 | 72.0 | 20.0 | 17.317 | O | 136 |
| A2579 | 7.0 | 73.0 | 20.0 | 17.016 | O | 136 |
| A2580 | 6.0 | 74.0 | 20.0 | 16.715 | O | 136 |
| A2581 | 5.0 | 75.0 | 20.0 | 16.415 | O | 136 |
| A2582 | 4.0 | 76.0 | 20.0 | 16.114 | O | 136 |
| A2583 | 3.0 | 77.0 | 20.0 | 15.813 | O | 136 |
| A2584 | 2.0 | 78.0 | 20.0 | 15.512 | O | 136 |
| A2585 | 1.0 | 79.0 | 20.0 | 15.211 | O | 136 |
| A2586 | 0.0 | 80.0 | 20.0 | 14.910 | O | 136 |
| A2587 | 15.0 | 63.0 | 22.0 | 19.289 | X | 150 |
| A2588 | 14.1 | 63.9 | 22.0 | 19.018 | X | 150 |
| A2589 | 14.0 | 64.0 | 22.0 | 18.988 | O | 150 |
| A2590 | 13.0 | 65.0 | 22.0 | 18.687 | O | 150 |
| A2591 | 12.0 | 66.0 | 22.0 | 18.386 | O | 150 |
| A2592 | 11.0 | 67.0 | 22.0 | 18.085 | O | 150 |
| A2593 | 10.0 | 68.0 | 22.0 | 17.785 | O | 150 |
| A2594 | 9.0 | 69.0 | 22.0 | 17.484 | O | 150 |
| A2595 | 8.0 | 70.0 | 22.0 | 17.183 | O | 150 |
| A2596 | 7.0 | 71.0 | 22.0 | 16.882 | O | 150 |
| A2597 | 6.0 | 72.0 | 22.0 | 16.581 | O | 150 |
| A2598 | 5.0 | 73.0 | 22.0 | 16.281 | O | 150 |
| A2599 | 4.0 | 74.0 | 22.0 | 15.980 | O | 150 |
| A2600 | 3.0 | 75.0 | 22.0 | 15.679 | O | 150 |
| A2601 | 2.0 | 76.0 | 22.0 | 15.378 | O | 150 |
| A2602 | 1.0 | 77.0 | 22.0 | 15.077 | O | 150 |
| A2603 | 0.0 | 78.0 | 22.0 | 14.776 | O | 150 |
| A2604 | 26.0 | 0.0 | 74.0 | 19.112 | X | 501 |
| A2605 | 25.7 | 0.0 | 74.3 | 19.002 | X | 503 |
| A2606 | 25.6 | 0.0 | 74.4 | 18.965 | O | 504 |
| A2607 | 25.0 | 0.0 | 75.0 | 18.744 | O | 508 |

Tables 266 to 267 show the composition, combustion heat amount, and GWP of the working medium of a three-component system of propane, HFO-1132(E), and $CO_2$.

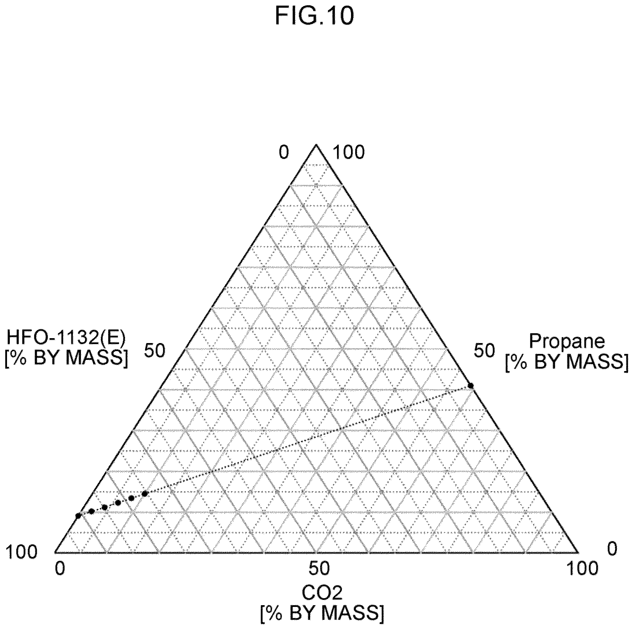

Fig. 10 shows a triangular diagram of a three-component system of propane, HFO-1132(E), and $CO_2$. Fig. 10 shows a straight line connecting (9.1, 90.9, 0.0) and (41.0, 0.0, 59.0) by (propane, HFO-1132(E), $CO_2$). A region including this straight line and having a low propane concentration indicates a region where the combustion heat amount for the three-component system of propane, HFO-1132(E), and $CO_2$ is less than 19.000 MJ/kg, and a region having a higher propane concentration than the straight line indicates a region where the combustion heat amount for the three-component system of propane, HFO-1132(E), and $CO_2$ is 19.000 MJ/kg or more.

The straight line in Fig. 10 is also expressed as follows:

in the case of (Propane, HFO-1132(E), $CO_2$) = (X, Y, Z),

(X, Y, Z) = (-0.351087Y+ 41.0, Y, 59.0 - 0.648913Y)
※ Y ≤ 90.9.

[Table 266]

| Case | propane | HFO-1132(E) | $CO_2$ | Heat of Combustion | Evaluation | GWP |
|---|---|---|---|---|---|---|
| A2608 | 11.0 | 87.0 | 2.0 | 19.235 | X | 1 |
| A2609 | 10.3 | 87.7 | 2.0 | 19.025 | X | 1 |
| A2610 | 10.2 | 87.8 | 2.0 | 18.995 | O | 1 |
| A2611 | 10.0 | 88.0 | 2.0 | 18.934 | O | 1 |
| A2612 | 9.0 | 89.0 | 2.0 | 18.634 | O | 1 |
| A2613 | 8.0 | 90.0 | 2.0 | 18.333 | O | 1 |
| A2614 | 7.0 | 91.0 | 2.0 | 18.032 | O | 1 |
| A2615 | 6.0 | 92.0 | 2.0 | 17.731 | O | 1 |
| A2616 | 5.0 | 93.0 | 2.0 | 17.430 | O | 1 |
| A2617 | 4.0 | 94.0 | 2.0 | 17.129 | O | 1 |
| A2618 | 3.0 | 95.0 | 2.0 | 16.829 | O | 1 |
| A2619 | 2.0 | 96.0 | 2.0 | 16.528 | O | 1 |
| A2620 | 1.0 | 97.0 | 2.0 | 16.227 | O | 1 |
| A2621 | 0.0 | 98.0 | 2.0 | 15.926 | O | 1 |
| A2622 | 12.0 | 84.0 | 4.0 | 19.211 | X | 1 |
| A2623 | 11.3 | 84.7 | 4.0 | 19.000 | X | 1 |
| A2624 | 11.2 | 84.8 | 4.0 | 18.970 | O | 1 |
| A2625 | 11.0 | 85.0 | 4.0 | 18.910 | O | 1 |
| A2626 | 10.0 | 86.0 | 4.0 | 18.609 | O | 1 |
| A2627 | 9.0 | 87.0 | 4.0 | 18.309 | O | 1 |
| A2628 | 8.0 | 88.0 | 4.0 | 18.008 | O | 1 |
| A2629 | 7.0 | 89.0 | 4.0 | 17.707 | O | 1 |
| A2630 | 6.0 | 90.0 | 4.0 | 17.406 | O | 1 |
| A2631 | 5.0 | 91.0 | 4.0 | 17.105 | O | 1 |
| A2632 | 4.0 | 92.0 | 4.0 | 16.804 | O | 1 |
| A2633 | 3.0 | 93.0 | 4.0 | 16.504 | O | 1 |
| A2634 | 2.0 | 94.0 | 4.0 | 16.203 | O | 1 |
| A2635 | 1.0 | 95.0 | 4.0 | 15.902 | O | 1 |
| A2636 | 0.0 | 96.0 | 4.0 | 15.601 | O | 1 |
| A2637 | 13.0 | 81.0 | 6.0 | 19.187 | X | 1 |
| A2638 | 12.4 | 81.6 | 6.0 | 19.006 | X | 1 |
| A2639 | 12.3 | 81.7 | 6.0 | 18.976 | O | 1 |
| A2640 | 12.0 | 82.0 | 6.0 | 18.886 | O | 1 |
| A2641 | 11.0 | 83.0 | 6.0 | 18.585 | O | 1 |
| A2642 | 10.0 | 84.0 | 6.0 | 18.284 | O | 1 |
| A2643 | 9.0 | 85.0 | 6.0 | 17.984 | O | 1 |
| A2644 | 8.0 | 86.0 | 6.0 | 17.683 | O | 1 |
| A2645 | 7.0 | 87.0 | 6.0 | 17.382 | O | 1 |
| A2646 | 6.0 | 88.0 | 6.0 | 17.081 | O | 1 |
| A2647 | 5.0 | 89.0 | 6.0 | 16.780 | O | 1 |
| A2648 | 4.0 | 90.0 | 6.0 | 16.479 | O | 1 |
| A2649 | 3.0 | 91.0 | 6.0 | 16.179 | O | 1 |
| A2650 | 2.0 | 92.0 | 6.0 | 15.878 | O | 1 |
| A2651 | 1.0 | 93.0 | 6.0 | 15.577 | O | 1 |
| A2652 | 0.0 | 94.0 | 6.0 | 15.276 | O | 1 |
| A2653 | 14.0 | 78.0 | 8.0 | 19.163 | X | 1 |
| A2654 | 13.5 | 78.5 | 8.0 | 19.012 | X | 1 |
| A2655 | 13.4 | 78.6 | 8.0 | 18.982 | O | 1 |
| A2656 | 13.0 | 79.0 | 8.0 | 18.862 | O | 1 |
| A2657 | 12.0 | 80.0 | 8.0 | 18.561 | O | 1 |

[Table 267]

| A2658 | 11.0 | 81.0 | 8.0 | 18.260 | O | 1 |
|-------|------|------|-----|--------|---|---|
| A2659 | 10.0 | 82.0 | 8.0 | 17.959 | O | 1 |
| A2660 | 9.0 | 83.0 | 8.0 | 17.658 | O | 1 |
| A2661 | 8.0 | 84.0 | 8.0 | 17.358 | O | 1 |
| A2662 | 7.0 | 85.0 | 8.0 | 17.057 | O | 1 |
| A2663 | 6.0 | 86.0 | 8.0 | 16.756 | O | 1 |
| A2664 | 5.0 | 87.0 | 8.0 | 16.455 | O | 1 |
| A2665 | 4.0 | 88.0 | 8.0 | 16.154 | O | 1 |
| A2666 | 3.0 | 89.0 | 8.0 | 15.853 | O | 1 |
| A2667 | 2.0 | 90.0 | 8.0 | 15.553 | O | 1 |
| A2668 | 1.0 | 91.0 | 8.0 | 15.252 | O | 1 |
| A2669 | 0.0 | 92.0 | 8.0 | 14.951 | O | 1 |
| A2670 | 15.0 | 75.0 | 10.0 | 19.138 | X | 1 |
| A2671 | 14.6 | 75.4 | 10.0 | 19.018 | X | 1 |
| A2672 | 14.5 | 75.5 | 10.0 | 18.988 | O | 1 |
| A2673 | 14.0 | 76.0 | 10.0 | 18.838 | O | 1 |
| A2674 | 13.0 | 77.0 | 10.0 | 18.537 | O | 1 |
| A2675 | 12.0 | 78.0 | 10.0 | 18.236 | O | 1 |
| A2676 | 11.0 | 79.0 | 10.0 | 17.935 | O | 1 |
| A2677 | 10.0 | 80.0 | 10.0 | 17.634 | O | 1 |
| A2678 | 9.0 | 81.0 | 10.0 | 17.333 | O | 1 |
| A2679 | 8.0 | 82.0 | 10.0 | 17.033 | O | 1 |
| A2680 | 7.0 | 83.0 | 10.0 | 16.732 | O | 1 |
| A2681 | 6.0 | 84.0 | 10.0 | 16.431 | O | 1 |
| A2682 | 5.0 | 85.0 | 10.0 | 16.130 | O | 1 |
| A2683 | 4.0 | 86.0 | 10.0 | 15.829 | O | 1 |
| A2684 | 3.0 | 87.0 | 10.0 | 15.528 | O | 1 |
| A2685 | 2.0 | 88.0 | 10.0 | 15.228 | O | 1 |
| A2686 | 1.0 | 89.0 | 10.0 | 14.927 | O | 1 |
| A2687 | 0.0 | 90.0 | 10.0 | 14.626 | O | 1 |
| A2721 | 42.0 | 0.0 | 58.0 | 19.460 | X | 1 |
| A2722 | 41.1 | 0.0 | 58.9 | 19.043 | X | 1 |
| A2723 | 41.0 | 0.0 | 59.0 | 18.997 | O | 1 |

Tables 268 to 274 show the composition, combustion heat amount, and GWP of the working medium of a three-component system of propane, HFO-1132(E), and $CF_3I$.

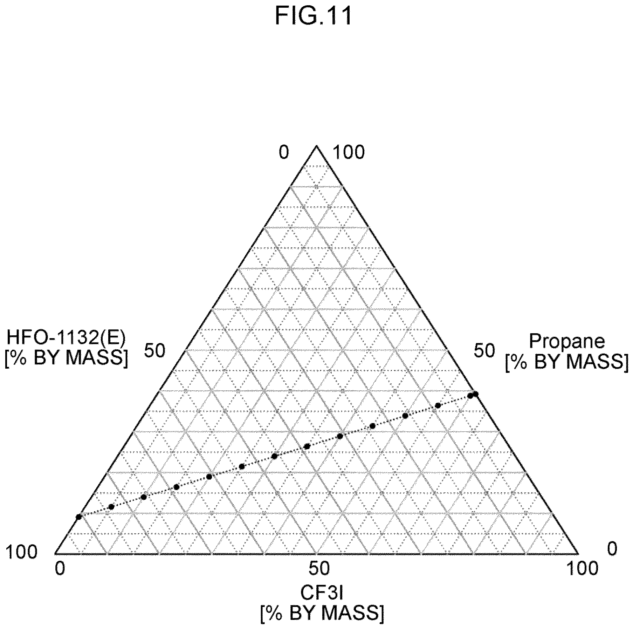

Fig. 11 shows a triangular diagram of a three-component system of propane, HFO-1132(E), and $CF_3I$. Fig. 11 shows a straight line connecting (9.1,90.9,0.0) and (39.2,0.0,60.8) by (propane, HFO-1132(E), $CF_3I$). A region including this straight line and having a low propane concentration indicates a region where the combustion heat amount for the three-component system of propane, HFO-1132(E), and $CF_3I$ is less than 19.000 MJ/kg, and a region having a higher propane concentration than the straight line indicates a region where the combustion heat amount for the three-component system of propane, HFO-1132(E), and $CF_3I$ is 19.000 MJ/kg or more.

The straight line in Fig. 11 is also expressed as follows:

in the case of (Propane, HFO-1132(E), $CF_3I$) = (X, Y, Z),
(X, Y, Z) = (-0.331123Y+ 39.2, Y, 60.8 - 0.6689Y)
※ Y ≤ 90.9

[Table 268]

| Case | propane | HFO-1132(E) | CF$_3$I | Heat of Combustion | Evaluation | GWP |
|---|---|---|---|---|---|---|
| A2724 | 12.0 | 83.0 | 5.0 | 19.115 | X | 1 |
| A2725 | 11.7 | 83.3 | 5.0 | 19.025 | **X** | 1 |
| A2726 | 11.6 | 83.4 | 5.0 | 18.995 | O | 1 |
| A2727 | 11.0 | 84.0 | 5.0 | 18.814 | O | 1 |
| A2728 | 10.0 | 85.0 | 5.0 | 18.513 | O | 1 |
| A2729 | 9.0 | 86.0 | 5.0 | 18.213 | O | 1 |
| A2730 | 8.0 | 87.0 | 5.0 | 17.912 | O | 1 |
| A2731 | 7.0 | 88.0 | 5.0 | 17.611 | O | 1 |
| A2732 | 6.0 | 89.0 | 5.0 | 17.310 | O | 1 |
| A2733 | 5.0 | 90.0 | 5.0 | 17.009 | O | 1 |
| A2734 | 4.0 | 91.0 | 5.0 | 16.708 | O | 1 |
| A2735 | 3.0 | 92.0 | 5.0 | 16.408 | O | 1 |
| A2736 | 2.0 | 93.0 | 5.0 | 16.107 | O | 1 |
| A2737 | 1.0 | 94.0 | 5.0 | 15.806 | O | 1 |
| A2738 | 0.0 | 95.0 | 5.0 | 15.482 | O | 1 |
| A2739 | 15.0 | 75.0 | 10.0 | 19.272 | X | 1 |
| A2740 | 14.1 | 75.9 | 10.0 | 19.001 | X | 1 |
| A2741 | 14.0 | 76.0 | 10.0 | 18.971 | O | 1 |
| A2742 | 13.0 | 77.0 | 10.0 | 18.670 | O | 1 |
| A2743 | 12.0 | 78.0 | 10.0 | 18.369 | O | 1 |
| A2744 | 11.0 | 79.0 | 10.0 | 18.068 | O | 1 |
| A2745 | 10.0 | 80.0 | 10.0 | 17.767 | O | 1 |
| A2746 | 9.0 | 81.0 | 10.0 | 17.467 | O | 1 |
| A2747 | 8.0 | 82.0 | 10.0 | 17.166 | O | 1 |
| A2748 | 7.0 | 83.0 | 10.0 | 16.865 | O | 1 |
| A2749 | 6.0 | 84.0 | 10.0 | 16.564 | O | 1 |
| A2750 | 5.0 | 85.0 | 10.0 | 16.263 | O | 1 |
| A2751 | 4.0 | 86.0 | 10.0 | 15.962 | O | 1 |
| A2752 | 3.0 | 87.0 | 10.0 | 15.662 | O | 1 |
| A2753 | 2.0 | 88.0 | 10.0 | 15.361 | O | 1 |
| A2754 | 1.0 | 89.0 | 10.0 | 15.060 | O | 1 |
| A2755 | 0.0 | 90.0 | 10.0 | 14.714 | O | 1 |
| A2756 | 17.0 | 68.0 | 15.0 | 19.127 | X | 1 |
| A2757 | 16.6 | 68.4 | 15.0 | 19.007 | X | 1 |
| A2758 | 16.5 | 68.5 | 15.0 | 18.977 | O | 1 |
| A2759 | 16.0 | 69.0 | 15.0 | 18.826 | O | 1 |
| A2760 | 15.0 | 70.0 | 15.0 | 18.526 | O | 1 |
| A2761 | 14.0 | 71.0 | 15.0 | 18.225 | O | 1 |
| A2762 | 13.0 | 72.0 | 15.0 | 17.924 | O | 1 |
| A2763 | 12.0 | 73.0 | 15.0 | 17.623 | O | 1 |
| A2764 | 11.0 | 74.0 | 15.0 | 17.322 | O | 1 |
| A2765 | 10.0 | 75.0 | 15.0 | 17.021 | O | 1 |
| A2766 | 9.0 | 76.0 | 15.0 | 16.721 | O | 1 |
| A2767 | 8.0 | 77.0 | 15.0 | 16.420 | O | 1 |
| A2768 | 7.0 | 78.0 | 15.0 | 16.119 | O | 1 |
| A2769 | 6.0 | 79.0 | 15.0 | 15.818 | O | 1 |
| A2770 | 5.0 | 80.0 | 15.0 | 15.517 | O | 1 |
| A2771 | 4.0 | 81.0 | 15.0 | 15.216 | O | 1 |
| A2772 | 3.0 | 82.0 | 15.0 | 14.916 | O | 1 |
| A2773 | 2.0 | 83.0 | 15.0 | 14.615 | O | 1 |

[Table 269]

288

| A2774 | 1.0 | 84.0 | 15.0 | 14.300 | O | 1 |
|---|---|---|---|---|---|---|
| A2775 | 0.0 | 85.0 | 15.0 | 13.945 | O | 1 |
| A2776 | 20.0 | 60.0 | 20.0 | 19.284 | X | 1 |
| A2777 | 19.1 | 60.9 | 20.0 | 19.013 | X | 1 |
| A2778 | 19.0 | 61.0 | 20.0 | 18.983 | O | 1 |
| A2779 | 18.0 | 62.0 | 20.0 | 18.682 | O | 1 |
| A2780 | 17.0 | 63.0 | 20.0 | 18.381 | O | 1 |
| A2781 | 16.0 | 64.0 | 20.0 | 18.080 | O | 1 |
| A2782 | 15.0 | 65.0 | 20.0 | 17.779 | O | 1 |
| A2783 | 14.0 | 66.0 | 20.0 | 17.479 | O | 1 |
| A2784 | 13.0 | 67.0 | 20.0 | 17.178 | O | 1 |
| A2785 | 12.0 | 68.0 | 20.0 | 16.877 | O | 1 |
| A2786 | 11.0 | 69.0 | 20.0 | 16.576 | O | 1 |
| A2787 | 10.0 | 70.0 | 20.0 | 16.275 | O | 1 |
| A2788 | 9.0 | 71.0 | 20.0 | 15.975 | O | 1 |
| A2789 | 8.0 | 72.0 | 20.0 | 15.674 | O | 1 |
| A2790 | 7.0 | 73.0 | 20.0 | 15.373 | O | 1 |
| A2791 | 6.0 | 74.0 | 20.0 | 15.072 | O | 1 |
| A2792 | 5.0 | 75.0 | 20.0 | 14.771 | O | 1 |
| A2793 | 4.0 | 76.0 | 20.0 | 14.470 | O | 1 |
| A2794 | 3.0 | 77.0 | 20.0 | 14.170 | O | 1 |
| A2795 | 2.0 | 78.0 | 20.0 | 13.869 | O | 1 |
| A2796 | 1.0 | 79.0 | 20.0 | 13.531 | O | 1 |
| A2797 | 0.0 | 80.0 | 20.0 | 13.176 | O | 1 |
| A2798 | 22.0 | 53.0 | 25.0 | 19.139 | X | 1 |
| A2799 | 21.6 | 53.4 | 25.0 | 19.019 | X | 1 |
| A2800 | 21.5 | 53.5 | 25.0 | 18.989 | O | 1 |
| A2801 | 21.0 | 54.0 | 25.0 | 18.838 | O | 1 |
| A2802 | 20.0 | 55.0 | 25.0 | 18.538 | O | 1 |
| A2803 | 19.0 | 56.0 | 25.0 | 18.237 | O | 1 |
| A2804 | 18.0 | 57.0 | 25.0 | 17.936 | O | 1 |
| A2805 | 17.0 | 58.0 | 25.0 | 17.635 | O | 1 |
| A2806 | 16.0 | 59.0 | 25.0 | 17.334 | O | 1 |
| A2807 | 15.0 | 60.0 | 25.0 | 17.033 | O | 1 |
| A2808 | 14.0 | 61.0 | 25.0 | 16.733 | O | 1 |
| A2809 | 13.0 | 62.0 | 25.0 | 16.432 | O | 1 |
| A2810 | 12.0 | 63.0 | 25.0 | 16.131 | O | 1 |
| A2811 | 11.0 | 64.0 | 25.0 | 15.830 | O | 1 |
| A2812 | 10.0 | 65.0 | 25.0 | 15.529 | O | 1 |
| A2813 | 9.0 | 66.0 | 25.0 | 15.228 | O | 1 |
| A2814 | 8.0 | 67.0 | 25.0 | 14.928 | O | 1 |
| A2815 | 7.0 | 68.0 | 25.0 | 14.627 | O | 1 |
| A2816 | 6.0 | 69.0 | 25.0 | 14.326 | O | 1 |
| A2817 | 5.0 | 70.0 | 25.0 | 14.025 | O | 1 |
| A2818 | 4.0 | 71.0 | 25.0 | 13.724 | O | 1 |
| A2819 | 3.0 | 72.0 | 25.0 | 13.424 | O | 1 |
| A2820 | 2.0 | 73.0 | 25.0 | 13.117 | O | 1 |
| A2821 | 1.0 | 74.0 | 25.0 | 12.762 | O | 1 |
| A2822 | 0.0 | 75.0 | 25.0 | 12.407 | O | 1 |
| A2823 | 25.0 | 45.0 | 30.0 | 19.296 | X | 1 |

[Table 270]

| | | | | | | |
|---|---|---|---|---|---|---|
| A2824 | 24.1 | 45.9 | 30.0 | 19.025 | X | 1 |
| A2825 | 24.0 | 46.0 | 30.0 | 18.995 | O | 1 |
| A2826 | 23.0 | 47.0 | 30.0 | 18.694 | O | 1 |
| A2827 | 22.0 | 48.0 | 30.0 | 18.393 | O | 1 |
| A2828 | 21.0 | 49.0 | 30.0 | 18.092 | O | 1 |
| A2829 | 20.0 | 50.0 | 30.0 | 17.792 | O | 1 |
| A2830 | 19.0 | 51.0 | 30.0 | 17.491 | O | 1 |
| A2831 | 18.0 | 52.0 | 30.0 | 17.190 | O | 1 |
| A2832 | 17.0 | 53.0 | 30.0 | 16.889 | O | 1 |
| A2833 | 16.0 | 54.0 | 30.0 | 16.588 | O | 1 |
| A2834 | 15.0 | 55.0 | 30.0 | 16.287 | O | 1 |
| A2835 | 14.0 | 56.0 | 30.0 | 15.987 | O | 1 |
| A2836 | 13.0 | 57.0 | 30.0 | 15.686 | O | 1 |
| A2837 | 12.0 | 58.0 | 30.0 | 15.385 | O | 1 |
| A2838 | 11.0 | 59.0 | 30.0 | 15.084 | O | 1 |
| A2839 | 10.0 | 60.0 | 30.0 | 14.783 | O | 1 |
| A2840 | 9.0 | 61.0 | 30.0 | 14.482 | O | 1 |
| A2841 | 8.0 | 62.0 | 30.0 | 14.182 | O | 1 |
| A2842 | 7.0 | 63.0 | 30.0 | 13.881 | O | 1 |
| A2843 | 6.0 | 64.0 | 30.0 | 13.580 | O | 1 |
| A2844 | 5.0 | 65.0 | 30.0 | 13.279 | O | 1 |
| A2845 | 4.0 | 66.0 | 30.0 | 12.978 | O | 1 |
| A2846 | 3.0 | 67.0 | 30.0 | 12.678 | O | 1 |
| A2847 | 2.0 | 68.0 | 30.0 | 12.348 | O | 1 |
| A2848 | 1.0 | 69.0 | 30.0 | 11.993 | O | 1 |
| A2849 | 0.0 | 70.0 | 30.0 | 11.639 | O | 1 |
| A2850 | 27.0 | 38.0 | 35.0 | 19.151 | X | 1 |
| A2851 | 26.5 | 38.5 | 35.0 | 19.001 | X | 1 |
| A2852 | 26.4 | 38.6 | 35.0 | 18.971 | O | 1 |
| A2853 | 26.0 | 39.0 | 35.0 | 18.851 | O | 1 |
| A2854 | 25.0 | 40.0 | 35.0 | 18.550 | O | 1 |
| A2855 | 24.0 | 41.0 | 35.0 | 18.249 | O | 1 |
| A2856 | 23.0 | 42.0 | 35.0 | 17.948 | O | 1 |
| A2857 | 22.0 | 43.0 | 35.0 | 17.647 | O | 1 |
| A2858 | 21.0 | 44.0 | 35.0 | 17.346 | O | 1 |
| A2859 | 20.0 | 45.0 | 35.0 | 17.046 | O | 1 |
| A2860 | 19.0 | 46.0 | 35.0 | 16.745 | O | 1 |
| A2861 | 18.0 | 47.0 | 35.0 | 16.444 | O | 1 |
| A2862 | 17.0 | 48.0 | 35.0 | 16.143 | O | 1 |
| A2863 | 16.0 | 49.0 | 35.0 | 15.842 | O | 1 |
| A2864 | 15.0 | 50.0 | 35.0 | 15.541 | O | 1 |
| A2865 | 14.0 | 51.0 | 35.0 | 15.241 | O | 1 |
| A2866 | 13.0 | 52.0 | 35.0 | 14.940 | O | 1 |
| A2867 | 12.0 | 53.0 | 35.0 | 14.639 | O | 1 |
| A2868 | 11.0 | 54.0 | 35.0 | 14.338 | O | 1 |
| A2869 | 10.0 | 55.0 | 35.0 | 14.037 | O | 1 |
| A2870 | 9.0 | 56.0 | 35.0 | 13.736 | O | 1 |
| A2871 | 8.0 | 57.0 | 35.0 | 13.436 | O | 1 |
| A2872 | 7.0 | 58.0 | 35.0 | 13.135 | O | 1 |
| A2873 | 6.0 | 59.0 | 35.0 | 12.834 | O | 1 |

[Table 271]

| A2874 | 5.0 | 60.0 | 35.0 | 12.533 | O | 1 |
|-------|------|------|------|--------|---|---|
| A2875 | 4.0 | 61.0 | 35.0 | 12.232 | O | 1 |
| A2876 | 3.0 | 62.0 | 35.0 | 11.931 | O | 1 |
| A2877 | 2.0 | 63.0 | 35.0 | 11.579 | O | 1 |
| A2878 | 1.0 | 64.0 | 35.0 | 11.225 | O | 1 |
| A2879 | 0.0 | 65.0 | 35.0 | 10.870 | O | 1 |
| A2880 | 29.0 | 31.0 | 40.0 | 19.007 | X | 1 |
| A2881 | 28.9 | 31.1 | 40.0 | 18.977 | O | 1 |
| A2882 | 28.0 | 32.0 | 40.0 | 18.706 | O | 1 |
| A2883 | 27.0 | 33.0 | 40.0 | 18.405 | O | 1 |
| A2884 | 26.0 | 34.0 | 40.0 | 18.105 | O | 1 |
| A2885 | 25.0 | 35.0 | 40.0 | 17.804 | O | 1 |
| A2886 | 24.0 | 36.0 | 40.0 | 17.503 | O | 1 |
| A2887 | 23.0 | 37.0 | 40.0 | 17.202 | O | 1 |
| A2888 | 22.0 | 38.0 | 40.0 | 16.901 | O | 1 |
| A2889 | 21.0 | 39.0 | 40.0 | 16.600 | O | 1 |
| A2890 | 20.0 | 40.0 | 40.0 | 16.300 | O | 1 |
| A2891 | 19.0 | 41.0 | 40.0 | 15.999 | O | 1 |
| A2892 | 18.0 | 42.0 | 40.0 | 15.698 | O | 1 |
| A2893 | 17.0 | 43.0 | 40.0 | 15.397 | O | 1 |
| A2894 | 16.0 | 44.0 | 40.0 | 15.096 | O | 1 |
| A2895 | 15.0 | 45.0 | 40.0 | 14.795 | O | 1 |
| A2896 | 14.0 | 46.0 | 40.0 | 14.495 | O | 1 |
| A2897 | 13.0 | 47.0 | 40.0 | 14.194 | O | 1 |
| A2898 | 12.0 | 48.0 | 40.0 | 13.893 | O | 1 |
| A2899 | 11.0 | 49.0 | 40.0 | 13.592 | O | 1 |
| A2900 | 10.0 | 50.0 | 40.0 | 13.291 | O | 1 |
| A2901 | 9.0 | 51.0 | 40.0 | 12.990 | O | 1 |
| A2902 | 8.0 | 52.0 | 40.0 | 12.690 | O | 1 |
| A2903 | 7.0 | 53.0 | 40.0 | 12.389 | O | 1 |
| A2904 | 6.0 | 54.0 | 40.0 | 12.088 | O | 1 |
| A2905 | 5.0 | 55.0 | 40.0 | 11.787 | O | 1 |
| A2906 | 4.0 | 56.0 | 40.0 | 11.486 | O | 1 |
| A2907 | 3.0 | 57.0 | 40.0 | 11.165 | O | 1 |
| A2908 | 2.0 | 58.0 | 40.0 | 10.811 | O | 1 |
| A2909 | 1.0 | 59.0 | 40.0 | 10.456 | O | 1 |
| A2910 | 0.0 | 60.0 | 40.0 | 10.101 | O | 1 |
| A2911 | 32.0 | 23.0 | 45.0 | 19.164 | X | 1 |
| A2912 | 31.5 | 23.5 | 45.0 | 19.013 | X | 1 |
| A2913 | 31.4 | 23.6 | 45.0 | 18.983 | O | 1 |
| A2914 | 31.0 | 24.0 | 45.0 | 18.863 | O | 1 |
| A2915 | 30.0 | 25.0 | 45.0 | 18.562 | O | 1 |
| A2916 | 29.0 | 26.0 | 45.0 | 18.261 | O | 1 |
| A2917 | 28.0 | 27.0 | 45.0 | 17.960 | O | 1 |
| A2918 | 27.0 | 28.0 | 45.0 | 17.659 | O | 1 |
| A2919 | 26.0 | 29.0 | 45.0 | 17.359 | O | 1 |
| A2920 | 25.0 | 30.0 | 45.0 | 17.058 | O | 1 |
| A2921 | 24.0 | 31.0 | 45.0 | 16.757 | O | 1 |
| A2922 | 23.0 | 32.0 | 45.0 | 16.456 | O | 1 |
| A2923 | 22.0 | 33.0 | 45.0 | 16.155 | O | 1 |

[Table 272]

| | | | | | | |
|---|---|---|---|---|---|---|
| A2924 | 21.0 | 34.0 | 45.0 | 15.854 | O | 1 |
| A2925 | 20.0 | 35.0 | 45.0 | 15.554 | O | 1 |
| A2926 | 19.0 | 36.0 | 45.0 | 15.253 | O | 1 |
| A2927 | 18.0 | 37.0 | 45.0 | 14.952 | O | 1 |
| A2928 | 17.0 | 38.0 | 45.0 | 14.651 | O | 1 |
| A2929 | 16.0 | 39.0 | 45.0 | 14.350 | O | 1 |
| A2930 | 15.0 | 40.0 | 45.0 | 14.049 | O | 1 |
| A2931 | 14.0 | 41.0 | 45.0 | 13.749 | O | 1 |
| A2932 | 13.0 | 42.0 | 45.0 | 13.448 | O | 1 |
| A2933 | 12.0 | 43.0 | 45.0 | 13.147 | O | 1 |
| A2934 | 11.0 | 44.0 | 45.0 | 12.846 | O | 1 |
| A2935 | 10.0 | 45.0 | 45.0 | 12.545 | O | 1 |
| A2936 | 9.0 | 46.0 | 45.0 | 12.244 | O | 1 |
| A2937 | 8.0 | 47.0 | 45.0 | 11.944 | O | 1 |
| A2938 | 7.0 | 48.0 | 45.0 | 11.643 | O | 1 |
| A2939 | 6.0 | 49.0 | 45.0 | 11.342 | O | 1 |
| A2940 | 5.0 | 50.0 | 45.0 | 11.041 | O | 1 |
| A2941 | 4.0 | 51.0 | 45.0 | 10.740 | O | 1 |
| A2942 | 3.0 | 52.0 | 45.0 | 10.396 | O | 1 |
| A2943 | 2.0 | 53.0 | 45.0 | 10.042 | O | 1 |
| A2944 | 1.0 | 54.0 | 45.0 | 9.687 | O | 1 |
| A2945 | 0.0 | 55.0 | 45.0 | 9.332 | O | 1 |
| A2946 | 34.0 | 16.0 | 50.0 | 19.019 | X | 1 |
| A2947 | 33.9 | 16.1 | 50.0 | 18.989 | O | 1 |
| A2948 | 33.0 | 17.0 | 50.0 | 18.718 | O | 1 |
| A2949 | 32.0 | 18.0 | 50.0 | 18.418 | O | 1 |
| A2950 | 31.0 | 19.0 | 50.0 | 18.117 | O | 1 |
| A2951 | 30.0 | 20.0 | 50.0 | 17.816 | O | 1 |
| A2952 | 29.0 | 21.0 | 50.0 | 17.515 | O | 1 |
| A2953 | 28.0 | 22.0 | 50.0 | 17.214 | O | 1 |
| A2954 | 27.0 | 23.0 | 50.0 | 16.913 | O | 1 |
| A2955 | 26.0 | 24.0 | 50.0 | 16.613 | O | 1 |
| A2956 | 25.0 | 25.0 | 50.0 | 16.312 | O | 1 |
| A2957 | 24.0 | 26.0 | 50.0 | 16.011 | O | 1 |
| A2958 | 23.0 | 27.0 | 50.0 | 15.710 | O | 1 |
| A2959 | 22.0 | 28.0 | 50.0 | 15.409 | O | 1 |
| A2960 | 21.0 | 29.0 | 50.0 | 15.108 | O | 1 |
| A2961 | 20.0 | 30.0 | 50.0 | 14.808 | O | 1 |
| A2962 | 19.0 | 31.0 | 50.0 | 14.507 | O | 1 |
| A2963 | 18.0 | 32.0 | 50.0 | 14.206 | O | 1 |
| A2964 | 17.0 | 33.0 | 50.0 | 13.905 | O | 1 |
| A2965 | 16.0 | 34.0 | 50.0 | 13.604 | O | 1 |
| A2966 | 15.0 | 35.0 | 50.0 | 13.303 | O | 1 |
| A2967 | 14.0 | 36.0 | 50.0 | 13.003 | O | 1 |
| A2968 | 13.0 | 37.0 | 50.0 | 12.702 | O | 1 |
| A2969 | 12.0 | 38.0 | 50.0 | 12.401 | O | 1 |
| A2970 | 11.0 | 39.0 | 50.0 | 12.100 | O | 1 |
| A2971 | 10.0 | 40.0 | 50.0 | 11.799 | O | 1 |
| A2972 | 9.0 | 41.0 | 50.0 | 11.498 | O | 1 |
| A2973 | 8.0 | 42.0 | 50.0 | 11.198 | O | 1 |

[Table 273]

292

| A2974 | 7.0 | 43.0 | 50.0 | 10.897 | O | 1 |
|---|---|---|---|---|---|---|
| A2975 | 6.0 | 44.0 | 50.0 | 10.596 | O | 1 |
| A2976 | 5.0 | 45.0 | 50.0 | 10.295 | O | 1 |
| A2977 | 4.0 | 46.0 | 50.0 | 9.982 | O | 1 |
| A2978 | 3.0 | 47.0 | 50.0 | 9.628 | O | 1 |
| A2979 | 2.0 | 48.0 | 50.0 | 9.273 | O | 1 |
| A2980 | 1.0 | 49.0 | 50.0 | 8.918 | O | 1 |
| A2981 | 0.0 | 50.0 | 50.0 | 8.564 | O | 1 |
| A2982 | 37.0 | 8.0 | 55.0 | 19.176 | X | 1 |
| A2983 | 36.5 | 8.5 | 55.0 | 19.025 | X | 1 |
| A2984 | 36.4 | 8.6 | 55.0 | 18.995 | O | 1 |
| A2985 | 36.0 | 9.0 | 55.0 | 18.875 | O | 1 |
| A2986 | 35.0 | 10.0 | 55.0 | 18.574 | O | 1 |
| A2987 | 34.0 | 11.0 | 55.0 | 18.273 | O | 1 |
| A2988 | 33.0 | 12.0 | 55.0 | 17.972 | O | 1 |
| A2989 | 32.0 | 13.0 | 55.0 | 17.672 | O | 1 |
| A2990 | 31.0 | 14.0 | 55.0 | 17.371 | O | 1 |
| A2991 | 30.0 | 15.0 | 55.0 | 17.070 | O | 1 |
| A2992 | 29.0 | 16.0 | 55.0 | 16.769 | O | 1 |
| A2993 | 28.0 | 17.0 | 55.0 | 16.468 | O | 1 |
| A2994 | 27.0 | 18.0 | 55.0 | 16.167 | O | 1 |
| A2995 | 26.0 | 19.0 | 55.0 | 15.867 | O | 1 |
| A2996 | 25.0 | 20.0 | 55.0 | 15.566 | O | 1 |
| A2997 | 24.0 | 21.0 | 55.0 | 15.265 | O | 1 |
| A2998 | 23.0 | 22.0 | 55.0 | 14.964 | O | 1 |
| A2999 | 22.0 | 23.0 | 55.0 | 14.663 | O | 1 |
| A3000 | 21.0 | 24.0 | 55.0 | 14.362 | O | 1 |
| A3001 | 20.0 | 25.0 | 55.0 | 14.062 | O | 1 |
| A3002 | 19.0 | 26.0 | 55.0 | 13.761 | O | 1 |
| A3003 | 18.0 | 27.0 | 55.0 | 13.460 | O | 1 |
| A3004 | 17.0 | 28.0 | 55.0 | 13.159 | O | 1 |
| A3005 | 16.0 | 29.0 | 55.0 | 12.858 | O | 1 |
| A3006 | 15.0 | 30.0 | 55.0 | 12.557 | O | 1 |
| A3007 | 14.0 | 31.0 | 55.0 | 12.257 | O | 1 |
| A3008 | 13.0 | 32.0 | 55.0 | 11.956 | O | 1 |
| A3009 | 12.0 | 33.0 | 55.0 | 11.655 | O | 1 |
| A3010 | 11.0 | 34.0 | 55.0 | 11.354 | O | 1 |
| A3011 | 10.0 | 35.0 | 55.0 | 11.053 | O | 1 |
| A3012 | 9.0 | 36.0 | 55.0 | 10.752 | O | 1 |
| A3013 | 8.0 | 37.0 | 55.0 | 10.452 | O | 1 |
| A3014 | 7.0 | 38.0 | 55.0 | 10.151 | O | 1 |
| A3015 | 6.0 | 39.0 | 55.0 | 9.850 | O | 1 |
| A3016 | 5.0 | 40.0 | 55.0 | 9.549 | O | 1 |
| A3017 | 4.0 | 41.0 | 55.0 | 9.214 | O | 1 |
| A3018 | 3.0 | 42.0 | 55.0 | 8.859 | O | 1 |
| A3019 | 2.0 | 43.0 | 55.0 | 8.504 | O | 1 |
| A3020 | 1.0 | 44.0 | 55.0 | 8.150 | O | 1 |
| A3021 | 0.0 | 45.0 | 55.0 | 7.795 | O | 1 |
| A3022 | 39.0 | 1.0 | 60.0 | 19.031 | X | 1 |
| A3023 | 38.9 | 1.1 | 60.0 | 19.001 | X | 1 |

[Table 274]

| | | | | | |
|---|---|---|---|---|---|
| A3024 | 38.8 | 1.2 | 60.0 | 18.971 | O | 1 |
| A3025 | 38.0 | 2.0 | 60.0 | 18.730 | O | 1 |
| A3026 | 37.0 | 3.0 | 60.0 | 18.430 | O | 1 |
| A3027 | 36.0 | 4.0 | 60.0 | 18.129 | O | 1 |
| A3028 | 35.0 | 5.0 | 60.0 | 17.828 | O | 1 |
| A3029 | 34.0 | 6.0 | 60.0 | 17.527 | O | 1 |
| A3030 | 33.0 | 7.0 | 60.0 | 17.226 | O | 1 |
| A3031 | 32.0 | 8.0 | 60.0 | 16.926 | O | 1 |
| A3032 | 31.0 | 9.0 | 60.0 | 16.625 | O | 1 |
| A3033 | 30.0 | 10.0 | 60.0 | 16.324 | O | 1 |
| A3034 | 29.0 | 11.0 | 60.0 | 16.023 | O | 1 |
| A3035 | 28.0 | 12.0 | 60.0 | 15.722 | O | 1 |
| A3036 | 27.0 | 13.0 | 60.0 | 15.421 | O | 1 |
| A3037 | 26.0 | 14.0 | 60.0 | 15.121 | O | 1 |
| A3038 | 25.0 | 15.0 | 60.0 | 14.820 | O | 1 |
| A3039 | 24.0 | 16.0 | 60.0 | 14.519 | O | 1 |
| A3040 | 23.0 | 17.0 | 60.0 | 14.218 | O | 1 |
| A3041 | 22.0 | 18.0 | 60.0 | 13.917 | O | 1 |
| A3042 | 21.0 | 19.0 | 60.0 | 13.616 | O | 1 |
| A3043 | 20.0 | 20.0 | 60.0 | 13.316 | O | 1 |
| A3044 | 19.0 | 21.0 | 60.0 | 13.015 | O | 1 |
| A3045 | 18.0 | 22.0 | 60.0 | 12.714 | O | 1 |
| A3046 | 17.0 | 23.0 | 60.0 | 12.413 | O | 1 |
| A3047 | 16.0 | 24.0 | 60.0 | 12.112 | O | 1 |
| A3048 | 15.0 | 25.0 | 60.0 | 11.811 | O | 1 |
| A3049 | 14.0 | 26.0 | 60.0 | 11.511 | O | 1 |
| A3050 | 13.0 | 27.0 | 60.0 | 11.210 | O | 1 |
| A3051 | 12.0 | 28.0 | 60.0 | 10.909 | O | 1 |
| A3052 | 11.0 | 29.0 | 60.0 | 10.608 | O | 1 |
| A3053 | 10.0 | 30.0 | 60.0 | 10.307 | O | 1 |
| A3054 | 9.0 | 31.0 | 60.0 | 10.006 | O | 1 |
| A3055 | 8.0 | 32.0 | 60.0 | 9.706 | O | 1 |
| A3056 | 7.0 | 33.0 | 60.0 | 9.405 | O | 1 |
| A3057 | 6.0 | 34.0 | 60.0 | 9.104 | O | 1 |
| A3058 | 5.0 | 35.0 | 60.0 | 8.800 | O | 1 |
| A3059 | 4.0 | 36.0 | 60.0 | 8.445 | O | 1 |
| A3060 | 3.0 | 37.0 | 60.0 | 8.090 | O | 1 |
| A3061 | 2.0 | 38.0 | 60.0 | 7.736 | O | 1 |
| A3062 | 1.0 | 39.0 | 60.0 | 7.381 | O | 1 |
| A3063 | 0.0 | 40.0 | 60.0 | 7.026 | O | 1 |
| A3064 | 39.3 | 0.0 | 60.7 | 19.017 | X | 1 |
| A3065 | 39.2 | 0.0 | 60.8 | 18.972 | O | 1 |
| A3066 | 39.0 | 0.0 | 61.0 | 18.882 | O | 1 |

Tables 275 to 296 show the composition, combustion heat amount, and GWP of the working medium of a four-component system of propane, HFO-1132(E), HFO-1234yf, and HFO-1234ze(E).

[Table 275]

| Case | propane | HFO-1132(E) | HFO-1234yf | HFO-1234ze(E) | Heat of Combustion | Evaluation | GWP |
|------|---------|-------------|------------|---------------|--------------------|------------|-----|
| A3067 | 11.0 | 79.0 | 5.0 | 5.0 | 19.031 | X | 1 |
| A3068 | 10.9 | 79.1 | 5.0 | 5.0 | 19.001 | X | 1 |
| A3069 | 10.8 | 79.2 | 5.0 | 5.0 | 18.970 | O | 1 |
| A3070 | 10.0 | 80.0 | 5.0 | 5.0 | 18.730 | O | 1 |
| A3071 | 9.0 | 81.0 | 5.0 | 5.0 | 18.429 | O | 1 |
| A3072 | 8.0 | 82.0 | 5.0 | 5.0 | 18.128 | O | 1 |
| A3073 | 7.0 | 83.0 | 5.0 | 5.0 | 17.827 | O | 1 |
| A3074 | 6.0 | 84.0 | 5.0 | 5.0 | 17.527 | O | 1 |
| A3075 | 5.0 | 85.0 | 5.0 | 5.0 | 17.226 | O | 1 |
| A3076 | 4.0 | 86.0 | 5.0 | 5.0 | 16.925 | O | 1 |
| A3077 | 3.0 | 87.0 | 5.0 | 5.0 | 16.624 | O | 1 |
| A3078 | 2.0 | 88.0 | 5.0 | 5.0 | 16.323 | O | 1 |
| A3079 | 1.0 | 89.0 | 5.0 | 5.0 | 16.022 | O | 1 |
| A3080 | 0.0 | 90.0 | 5.0 | 5.0 | 15.669 | O | 1 |
| A3081 | 12.0 | 73.0 | 10.0 | 5.0 | 19.082 | X | 1 |
| A3082 | 11.8 | 73.2 | 10.0 | 5.0 | 19.021 | X | 1 |
| A3083 | 11.7 | 73.3 | 10.0 | 5.0 | 18.991 | O | 1 |
| A3084 | 11.0 | 74.0 | 10.0 | 5.0 | 18.781 | O | 1 |
| A3085 | 10.0 | 75.0 | 10.0 | 5.0 | 18.480 | O | 1 |
| A3086 | 9.0 | 76.0 | 10.0 | 5.0 | 18.179 | O | 1 |
| A3087 | 8.0 | 77.0 | 10.0 | 5.0 | 17.878 | O | 1 |
| A3088 | 7.0 | 78.0 | 10.0 | 5.0 | 17.577 | O | 1 |
| A3089 | 6.0 | 79.0 | 10.0 | 5.0 | 17.277 | O | 1 |
| A3090 | 5.0 | 80.0 | 10.0 | 5.0 | 16.976 | O | 1 |
| A3091 | 4.0 | 81.0 | 10.0 | 5.0 | 16.675 | O | 1 |
| A3092 | 3.0 | 82.0 | 10.0 | 5.0 | 16.374 | O | 1 |
| A3093 | 2.0 | 83.0 | 10.0 | 5.0 | 16.073 | O | 1 |
| A3094 | 1.0 | 84.0 | 10.0 | 5.0 | 15.748 | O | 1 |
| A3095 | 0.0 | 85.0 | 10.0 | 5.0 | 15.393 | O | 1 |
| A3096 | 13.0 | 67.0 | 15.0 | 5.0 | 19.132 | X | 1 |
| A3097 | 12.6 | 67.4 | 15.0 | 5.0 | 19.012 | X | 1 |
| A3098 | 12.5 | 67.5 | 15.0 | 5.0 | 18.982 | O | 1 |
| A3099 | 12.0 | 68.0 | 15.0 | 5.0 | 18.832 | O | 1 |
| A3100 | 10.0 | 70.0 | 15.0 | 5.0 | 18.230 | O | 1 |
| A3101 | 9.0 | 71.0 | 15.0 | 5.0 | 17.929 | O | 1 |
| A3102 | 8.0 | 72.0 | 15.0 | 5.0 | 17.628 | O | 1 |
| A3103 | 7.0 | 73.0 | 15.0 | 5.0 | 17.327 | O | 1 |
| A3104 | 6.0 | 74.0 | 15.0 | 5.0 | 17.027 | O | 1 |
| A3105 | 5.0 | 75.0 | 15.0 | 5.0 | 16.726 | O | 1 |
| A3106 | 4.0 | 76.0 | 15.0 | 5.0 | 16.425 | O | 1 |
| A3107 | 3.0 | 77.0 | 15.0 | 5.0 | 16.124 | O | 1 |
| A3108 | 2.0 | 78.0 | 15.0 | 5.0 | 15.823 | O | 1 |
| A3109 | 1.0 | 79.0 | 15.0 | 5.0 | 15.472 | O | 1 |
| A3110 | 0.0 | 80.0 | 15.0 | 5.0 | 15.117 | O | 1 |
| A3111 | 14.0 | 61.0 | 20.0 | 5.0 | 19.183 | X | 1 |
| A3112 | 13.4 | 61.6 | 20.0 | 5.0 | 19.003 | X | 1 |
| A3113 | 13.3 | 61.7 | 20.0 | 5.0 | 18.973 | O | 1 |
| A3114 | 13.0 | 62.0 | 20.0 | 5.0 | 18.882 | O | 1 |
| A3115 | 10.0 | 65.0 | 20.0 | 5.0 | 17.980 | O | 1 |
| A3116 | 9.0 | 66.0 | 20.0 | 5.0 | 17.679 | O | 1 |

[Table 276]

| A3117 | 8.0 | 67.0 | 20.0 | 5.0 | 17.378 | O | 1 |
|---|---|---|---|---|---|---|---|
| A3118 | 7.0 | 68.0 | 20.0 | 5.0 | 17.077 | O | 1 |
| A3119 | 6.0 | 69.0 | 20.0 | 5.0 | 16.777 | O | 1 |
| A3120 | 5.0 | 70.0 | 20.0 | 5.0 | 16.476 | O | 1 |
| A3121 | 4.0 | 71.0 | 20.0 | 5.0 | 16.175 | O | 1 |
| A3122 | 3.0 | 72.0 | 20.0 | 5.0 | 15.874 | O | 1 |
| A3123 | 2.0 | 73.0 | 20.0 | 5.0 | 15.551 | O | 1 |
| A3124 | 1.0 | 74.0 | 20.0 | 5.0 | 15.196 | O | 1 |
| A3125 | 0.0 | 75.0 | 20.0 | 5.0 | 14.842 | O | 1 |
| A3126 | 15.0 | 55.0 | 25.0 | 5.0 | 19.234 | X | 1 |
| A3127 | 14.3 | 55.7 | 25.0 | 5.0 | 19.024 | X | 1 |
| A3128 | 14.2 | 55.8 | 25.0 | 5.0 | 18.994 | O | 1 |
| A3129 | 14.0 | 56.0 | 25.0 | 5.0 | 18.933 | O | 1 |
| A3130 | 10.0 | 60.0 | 25.0 | 5.0 | 17.730 | O | 1 |
| A3131 | 9.0 | 61.0 | 25.0 | 5.0 | 17.429 | O | 1 |
| A3132 | 8.0 | 62.0 | 25.0 | 5.0 | 17.128 | O | 1 |
| A3133 | 7.0 | 63.0 | 25.0 | 5.0 | 16.828 | O | 1 |
| A3134 | 6.0 | 64.0 | 25.0 | 5.0 | 16.527 | O | 1 |
| A3135 | 5.0 | 65.0 | 25.0 | 5.0 | 16.226 | O | 1 |
| A3136 | 4.0 | 66.0 | 25.0 | 5.0 | 15.925 | O | 1 |
| A3137 | 3.0 | 67.0 | 25.0 | 5.0 | 15.624 | O | 1 |
| A3138 | 2.0 | 68.0 | 25.0 | 5.0 | 15.275 | O | 1 |
| A3139 | 1.0 | 69.0 | 25.0 | 5.0 | 14.920 | O | 1 |
| A3140 | 0.0 | 70.0 | 25.0 | 5.0 | 14.566 | O | 1 |
| A3141 | 16.0 | 49.0 | 30.0 | 5.0 | 19.285 | X | 1 |
| A3142 | 15.1 | 49.9 | 30.0 | 5.0 | 19.014 | X | 1 |
| A3143 | 15.0 | 50.0 | 30.0 | 5.0 | 18.984 | O | 1 |
| A3144 | 10.0 | 55.0 | 30.0 | 5.0 | 17.480 | O | 1 |
| A3145 | 9.0 | 56.0 | 30.0 | 5.0 | 17.179 | O | 1 |
| A3146 | 8.0 | 57.0 | 30.0 | 5.0 | 16.878 | O | 1 |
| A3147 | 7.0 | 58.0 | 30.0 | 5.0 | 16.578 | O | 1 |
| A3148 | 6.0 | 59.0 | 30.0 | 5.0 | 16.277 | O | 1 |
| A3149 | 5.0 | 60.0 | 30.0 | 5.0 | 15.976 | O | 1 |
| A3150 | 4.0 | 61.0 | 30.0 | 5.0 | 15.675 | O | 1 |
| A3151 | 3.0 | 62.0 | 30.0 | 5.0 | 15.354 | O | 1 |
| A3152 | 2.0 | 63.0 | 30.0 | 5.0 | 14.999 | O | 1 |
| A3153 | 1.0 | 64.0 | 30.0 | 5.0 | 14.644 | O | 1 |
| A3154 | 0.0 | 65.0 | 30.0 | 5.0 | 14.290 | O | 1 |
| A3155 | 16.0 | 44.0 | 35.0 | 5.0 | 19.035 | X | 1 |
| A3156 | 15.9 | 44.1 | 35.0 | 5.0 | 19.005 | X | 1 |
| A3157 | 15.8 | 44.2 | 35.0 | 5.0 | 18.975 | O | 1 |
| A3158 | 15.0 | 45.0 | 35.0 | 5.0 | 18.734 | O | 1 |
| A3159 | 10.0 | 50.0 | 35.0 | 5.0 | 17.230 | O | 1 |
| A3160 | 9.0 | 51.0 | 35.0 | 5.0 | 16.929 | O | 1 |
| A3161 | 8.0 | 52.0 | 35.0 | 5.0 | 16.628 | O | 1 |
| A3162 | 7.0 | 53.0 | 35.0 | 5.0 | 16.328 | O | 1 |
| A3163 | 6.0 | 54.0 | 35.0 | 5.0 | 16.027 | O | 1 |
| A3164 | 5.0 | 55.0 | 35.0 | 5.0 | 15.726 | O | 1 |
| A3165 | 4.0 | 56.0 | 35.0 | 5.0 | 15.425 | O | 1 |
| A3166 | 3.0 | 57.0 | 35.0 | 5.0 | 15.078 | O | 1 |

[Table 277]

| A3167 | 2.0 | 58.0 | 35.0 | 5.0 | 14.723 | O | 1 |
|-------|-----|------|------|-----|--------|---|---|
| A3168 | 1.0 | 59.0 | 35.0 | 5.0 | 14.368 | O | 1 |
| A3169 | 0.0 | 60.0 | 35.0 | 5.0 | 14.014 | O | 1 |
| A3170 | 17.0 | 38.0 | 40.0 | 5.0 | 19.086 | X | 1 |
| A3171 | 16.8 | 38.2 | 40.0 | 5.0 | 19.026 | X | 1 |
| A3172 | 16.7 | 38.3 | 40.0 | 5.0 | 18.996 | O | 1 |
| A3173 | 16.0 | 39.0 | 40.0 | 5.0 | 18.785 | O | 1 |
| A3174 | 15.0 | 40.0 | 40.0 | 5.0 | 18.484 | O | 1 |
| A3175 | 10.0 | 45.0 | 40.0 | 5.0 | 16.980 | O | 1 |
| A3176 | 9.0 | 46.0 | 40.0 | 5.0 | 16.679 | O | 1 |
| A3177 | 8.0 | 47.0 | 40.0 | 5.0 | 16.379 | O | 1 |
| A3178 | 7.0 | 48.0 | 40.0 | 5.0 | 16.078 | O | 1 |
| A3179 | 6.0 | 49.0 | 40.0 | 5.0 | 15.777 | O | 1 |
| A3180 | 5.0 | 50.0 | 40.0 | 5.0 | 15.476 | O | 1 |
| A3181 | 4.0 | 51.0 | 40.0 | 5.0 | 15.156 | O | 1 |
| A3182 | 3.0 | 52.0 | 40.0 | 5.0 | 14.802 | O | 1 |
| A3183 | 2.0 | 53.0 | 40.0 | 5.0 | 14.447 | O | 1 |
| A3184 | 1.0 | 54.0 | 40.0 | 5.0 | 14.092 | O | 1 |
| A3185 | 0.0 | 55.0 | 40.0 | 5.0 | 13.738 | O | 1 |
| A3186 | 18.0 | 32.0 | 45.0 | 5.0 | 19.137 | X | 1 |
| A3187 | 17.6 | 32.4 | 45.0 | 5.0 | 19.017 | X | 1 |
| A3188 | 17.5 | 32.5 | 45.0 | 5.0 | 18.986 | O | 1 |
| A3189 | 17.0 | 33.0 | 45.0 | 5.0 | 18.836 | O | 1 |
| A3190 | 15.0 | 35.0 | 45.0 | 5.0 | 18.234 | O | 1 |
| A3191 | 10.0 | 40.0 | 45.0 | 5.0 | 16.730 | O | 1 |
| A3192 | 9.0 | 41.0 | 45.0 | 5.0 | 16.429 | O | 1 |
| A3193 | 8.0 | 42.0 | 45.0 | 5.0 | 16.129 | O | 1 |
| A3194 | 7.0 | 43.0 | 45.0 | 5.0 | 15.828 | O | 1 |
| A3195 | 6.0 | 44.0 | 45.0 | 5.0 | 15.527 | O | 1 |
| A3196 | 5.0 | 45.0 | 45.0 | 5.0 | 15.226 | O | 1 |
| A3197 | 4.0 | 46.0 | 45.0 | 5.0 | 14.880 | O | 1 |
| A3198 | 3.0 | 47.0 | 45.0 | 5.0 | 14.526 | O | 1 |
| A3199 | 2.0 | 48.0 | 45.0 | 5.0 | 14.171 | O | 1 |
| A3200 | 1.0 | 49.0 | 45.0 | 5.0 | 13.816 | O | 1 |
| A3201 | 0.0 | 50.0 | 45.0 | 5.0 | 13.462 | O | 1 |
| A3202 | 19.0 | 26.0 | 50.0 | 5.0 | 19.188 | X | 1 |
| A3203 | 18.4 | 26.6 | 50.0 | 5.0 | 19.007 | X | 1 |
| A3204 | 18.3 | 26.7 | 50.0 | 5.0 | 18.977 | O | 1 |
| A3205 | 18.0 | 27.0 | 50.0 | 5.0 | 18.887 | O | 1 |
| A3206 | 15.0 | 30.0 | 50.0 | 5.0 | 17.984 | O | 1 |
| A3207 | 10.0 | 35.0 | 50.0 | 5.0 | 16.480 | O | 1 |
| A3208 | 9.0 | 36.0 | 50.0 | 5.0 | 16.179 | O | 1 |
| A3209 | 8.0 | 37.0 | 50.0 | 5.0 | 15.879 | O | 1 |
| A3210 | 7.0 | 38.0 | 50.0 | 5.0 | 15.578 | O | 1 |
| A3211 | 6.0 | 39.0 | 50.0 | 5.0 | 15.277 | O | 1 |
| A3212 | 5.0 | 40.0 | 50.0 | 5.0 | 14.959 | O | 1 |
| A3213 | 4.0 | 41.0 | 50.0 | 5.0 | 14.604 | O | 1 |
| A3214 | 3.0 | 42.0 | 50.0 | 5.0 | 14.250 | O | 1 |
| A3215 | 2.0 | 43.0 | 50.0 | 5.0 | 13.895 | O | 1 |
| A3216 | 1.0 | 44.0 | 50.0 | 5.0 | 13.540 | O | 1 |

[Table 278]

| A3217 | 0.0 | 45.0 | 50.0 | 5.0 | 13.186 | O | 1 |
|---|---|---|---|---|---|---|---|
| A3218 | 20.0 | 20.0 | 55.0 | 5.0 | 19.239 | X | 1 |
| A3219 | 19.3 | 20.7 | 55.0 | 5.0 | 19.028 | X | 1 |
| A3220 | 19.2 | 20.8 | 55.0 | 5.0 | 18.998 | O | 1 |
| A3221 | 19.0 | 21.0 | 55.0 | 5.0 | 18.938 | O | 1 |
| A3222 | 15.0 | 25.0 | 55.0 | 5.0 | 17.735 | O | 1 |
| A3223 | 10.0 | 30.0 | 55.0 | 5.0 | 16.230 | O | 1 |
| A3224 | 9.0 | 31.0 | 55.0 | 5.0 | 15.930 | O | 1 |
| A3225 | 8.0 | 32.0 | 55.0 | 5.0 | 15.629 | O | 1 |
| A3226 | 7.0 | 33.0 | 55.0 | 5.0 | 15.328 | O | 1 |
| A3227 | 6.0 | 34.0 | 55.0 | 5.0 | 15.027 | O | 1 |
| A3228 | 5.0 | 35.0 | 55.0 | 5.0 | 14.683 | O | 1 |
| A3229 | 4.0 | 36.0 | 55.0 | 5.0 | 14.328 | O | 1 |
| A3230 | 3.0 | 37.0 | 55.0 | 5.0 | 13.974 | O | 1 |
| A3231 | 2.0 | 38.0 | 55.0 | 5.0 | 13.619 | O | 1 |
| A3232 | 1.0 | 39.0 | 55.0 | 5.0 | 13.264 | O | 1 |
| A3233 | 0.0 | 40.0 | 55.0 | 5.0 | 12.910 | O | 1 |
| A3234 | 21.0 | 14.0 | 60.0 | 5.0 | 19.290 | X | 1 |
| A3235 | 20.1 | 14.9 | 60.0 | 5.0 | 19.019 | X | 1 |
| A3236 | 20.0 | 15.0 | 60.0 | 5.0 | 18.989 | O | 1 |
| A3237 | 15.0 | 20.0 | 60.0 | 5.0 | 17.485 | O | 1 |
| A3238 | 10.0 | 25.0 | 60.0 | 5.0 | 15.980 | O | 1 |
| A3239 | 9.0 | 26.0 | 60.0 | 5.0 | 15.680 | O | 1 |
| A3240 | 8.0 | 27.0 | 60.0 | 5.0 | 15.379 | O | 1 |
| A3241 | 7.0 | 28.0 | 60.0 | 5.0 | 15.078 | O | 1 |
| A3242 | 6.0 | 29.0 | 60.0 | 5.0 | 14.762 | O | 1 |
| A3243 | 5.0 | 30.0 | 60.0 | 5.0 | 14.407 | O | 1 |
| A3244 | 4.0 | 31.0 | 60.0 | 5.0 | 14.052 | O | 1 |
| A3245 | 3.0 | 32.0 | 60.0 | 5.0 | 13.698 | O | 1 |
| A3246 | 2.0 | 33.0 | 60.0 | 5.0 | 13.343 | O | 1 |
| A3247 | 1.0 | 34.0 | 60.0 | 5.0 | 12.988 | O | 1 |
| A3248 | 0.0 | 35.0 | 60.0 | 5.0 | 12.634 | O | 1 |
| A3249 | 21.0 | 9.0 | 65.0 | 5.0 | 19.040 | X | 1 |
| A3250 | 20.9 | 9.1 | 65.0 | 5.0 | 19.010 | X | 1 |
| A3251 | 20.8 | 9.2 | 65.0 | 5.0 | 18.979 | O | 1 |
| A3252 | 20.0 | 10.0 | 65.0 | 5.0 | 18.739 | O | 1 |
| A3253 | 15.0 | 15.0 | 65.0 | 5.0 | 17.235 | O | 1 |
| A3254 | 10.0 | 20.0 | 65.0 | 5.0 | 15.730 | O | 1 |
| A3255 | 9.0 | 21.0 | 65.0 | 5.0 | 15.430 | O | 1 |
| A3256 | 8.0 | 22.0 | 65.0 | 5.0 | 15.129 | O | 1 |
| A3257 | 7.0 | 23.0 | 65.0 | 5.0 | 14.828 | O | 1 |
| A3258 | 6.0 | 24.0 | 65.0 | 5.0 | 14.486 | O | 1 |
| A3259 | 5.0 | 25.0 | 65.0 | 5.0 | 14.131 | O | 1 |
| A3260 | 4.0 | 26.0 | 65.0 | 5.0 | 13.776 | O | 1 |
| A3261 | 3.0 | 27.0 | 65.0 | 5.0 | 13.422 | O | 1 |
| A3262 | 2.0 | 28.0 | 65.0 | 5.0 | 13.067 | O | 1 |
| A3263 | 1.0 | 29.0 | 65.0 | 5.0 | 12.712 | O | 1 |
| A3264 | 0.0 | 30.0 | 65.0 | 5.0 | 12.358 | O | 1 |
| A3265 | 22.0 | 3.0 | 70.0 | 5.0 | 19.091 | X | 1 |
| A3266 | 21.7 | 3.3 | 70.0 | 5.0 | 19.000 | X | 1 |

[Table 279]

| | | | | | | | |
|---|---|---|---|---|---|---|---|
| A3267 | 21.6 | 3.4 | 70.0 | 5.0 | 18.970 | O | 1 |
| A3268 | 21.0 | 4.0 | 70.0 | 5.0 | 18.790 | O | 1 |
| A3269 | 20.0 | 5.0 | 70.0 | 5.0 | 18.489 | O | 1 |
| A3270 | 15.0 | 10.0 | 70.0 | 5.0 | 16.985 | O | 1 |
| A3271 | 10.0 | 15.0 | 70.0 | 5.0 | 15.481 | O | 1 |
| A3272 | 9.0 | 16.0 | 70.0 | 5.0 | 15.180 | O | 1 |
| A3273 | 8.0 | 17.0 | 70.0 | 5.0 | 14.879 | O | 1 |
| A3274 | 7.0 | 18.0 | 70.0 | 5.0 | 14.565 | O | 1 |
| A3275 | 6.0 | 19.0 | 70.0 | 5.0 | 14.210 | O | 1 |
| A3276 | 5.0 | 20.0 | 70.0 | 5.0 | 13.855 | O | 1 |
| A3277 | 4.0 | 21.0 | 70.0 | 5.0 | 13.500 | O | 1 |
| A3278 | 3.0 | 22.0 | 70.0 | 5.0 | 13.146 | O | 1 |
| A3279 | 2.0 | 23.0 | 70.0 | 5.0 | 12.791 | O | 1 |
| A3280 | 1.0 | 24.0 | 70.0 | 5.0 | 12.436 | O | 1 |
| A3281 | 0.0 | 25.0 | 70.0 | 5.0 | 12.082 | O | 1 |
| A3282 | 12.0 | 73.0 | 5.0 | 10.0 | 19.052 | X | 1 |
| A3283 | 11.9 | 73.1 | 5.0 | 10.0 | 19.022 | X | 1 |
| A3284 | 11.8 | 73.2 | 5.0 | 10.0 | 18.992 | O | 1 |
| A3285 | 11.0 | 74.0 | 5.0 | 10.0 | 18.751 | O | 1 |
| A3286 | 10.0 | 75.0 | 5.0 | 10.0 | 18.450 | O | 1 |
| A3287 | 9.0 | 76.0 | 5.0 | 10.0 | 18.149 | O | 1 |
| A3288 | 8.0 | 77.0 | 5.0 | 10.0 | 17.849 | O | 1 |
| A3289 | 7.0 | 78.0 | 5.0 | 10.0 | 17.548 | O | 1 |
| A3290 | 6.0 | 79.0 | 5.0 | 10.0 | 17.247 | O | 1 |
| A3291 | 5.0 | 80.0 | 5.0 | 10.0 | 16.946 | O | 1 |
| A3292 | 4.0 | 81.0 | 5.0 | 10.0 | 16.645 | O | 1 |
| A3293 | 3.0 | 82.0 | 5.0 | 10.0 | 16.344 | O | 1 |
| A3294 | 2.0 | 83.0 | 5.0 | 10.0 | 16.044 | O | 1 |
| A3295 | 1.0 | 84.0 | 5.0 | 10.0 | 15.718 | O | 1 |
| A3296 | 0.0 | 85.0 | 5.0 | 10.0 | 15.364 | O | 1 |
| A3297 | 13.0 | 67.0 | 10.0 | 10.0 | 19.103 | X | 1 |
| A3298 | 12.7 | 67.3 | 10.0 | 10.0 | 19.012 | X | 1 |
| A3299 | 12.6 | 67.4 | 10.0 | 10.0 | 18.982 | O | 1 |
| A3300 | 12.0 | 68.0 | 10.0 | 10.0 | 18.802 | O | 1 |
| A3301 | 10.0 | 70.0 | 10.0 | 10.0 | 18.200 | O | 1 |
| A3302 | 9.0 | 71.0 | 10.0 | 10.0 | 17.899 | O | 1 |
| A3303 | 8.0 | 72.0 | 10.0 | 10.0 | 17.599 | O | 1 |
| A3304 | 7.0 | 73.0 | 10.0 | 10.0 | 17.298 | O | 1 |
| A3305 | 6.0 | 74.0 | 10.0 | 10.0 | 16.997 | O | 1 |
| A3306 | 5.0 | 75.0 | 10.0 | 10.0 | 16.696 | O | 1 |
| A3307 | 4.0 | 76.0 | 10.0 | 10.0 | 16.395 | O | 1 |
| A3308 | 3.0 | 77.0 | 10.0 | 10.0 | 16.094 | O | 1 |
| A3309 | 2.0 | 78.0 | 10.0 | 10.0 | 15.794 | O | 1 |
| A3310 | 1.0 | 79.0 | 10.0 | 10.0 | 15.443 | O | 1 |
| A3311 | 0.0 | 80.0 | 10.0 | 10.0 | 15.088 | O | 1 |
| A3312 | 14.0 | 61.0 | 15.0 | 10.0 | 19.154 | X | 1 |
| A3313 | 13.5 | 61.5 | 15.0 | 10.0 | 19.003 | X | 1 |
| A3314 | 13.4 | 61.6 | 15.0 | 10.0 | 18.973 | O | 1 |
| A3315 | 13.0 | 62.0 | 15.0 | 10.0 | 18.853 | O | 1 |
| A3316 | 10.0 | 65.0 | 15.0 | 10.0 | 17.950 | O | 1 |

[Table 280]

| | | | | | | | |
|---|---|---|---|---|---|---|---|
| A3317 | 9.0 | 66.0 | 15.0 | 10.0 | 17.649 | O | 1 |
| A3318 | 8.0 | 67.0 | 15.0 | 10.0 | 17.349 | O | 1 |
| A3319 | 7.0 | 68.0 | 15.0 | 10.0 | 17.048 | O | 1 |
| A3320 | 6.0 | 69.0 | 15.0 | 10.0 | 16.747 | O | 1 |
| A3321 | 5.0 | 70.0 | 15.0 | 10.0 | 16.446 | O | 1 |
| A3322 | 4.0 | 71.0 | 15.0 | 10.0 | 16.145 | O | 1 |
| A3323 | 3.0 | 72.0 | 15.0 | 10.0 | 15.844 | O | 1 |
| A3324 | 2.0 | 73.0 | 15.0 | 10.0 | 15.521 | O | 1 |
| A3325 | 1.0 | 74.0 | 15.0 | 10.0 | 15.167 | O | 1 |
| A3326 | 0.0 | 75.0 | 15.0 | 10.0 | 14.812 | O | 1 |
| A3327 | 15.0 | 55.0 | 20.0 | 10.0 | 19.205 | X | 1 |
| A3328 | 14.4 | 55.6 | 20.0 | 10.0 | 19.024 | X | 1 |
| A3329 | 14.3 | 55.7 | 20.0 | 10.0 | 18.994 | O | 1 |
| A3330 | 14.0 | 56.0 | 20.0 | 10.0 | 18.904 | O | 1 |
| A3331 | 10.0 | 60.0 | 20.0 | 10.0 | 17.700 | O | 1 |
| A3332 | 9.0 | 61.0 | 20.0 | 10.0 | 17.400 | O | 1 |
| A3333 | 8.0 | 62.0 | 20.0 | 10.0 | 17.099 | O | 1 |
| A3334 | 7.0 | 63.0 | 20.0 | 10.0 | 16.798 | O | 1 |
| A3335 | 6.0 | 64.0 | 20.0 | 10.0 | 16.497 | O | 1 |
| A3336 | 5.0 | 65.0 | 20.0 | 10.0 | 16.196 | O | 1 |
| A3337 | 4.0 | 66.0 | 20.0 | 10.0 | 15.895 | O | 1 |
| A3338 | 3.0 | 67.0 | 20.0 | 10.0 | 15.595 | O | 1 |
| A3339 | 2.0 | 68.0 | 20.0 | 10.0 | 15.245 | O | 1 |
| A3340 | 1.0 | 69.0 | 20.0 | 10.0 | 14.891 | O | 1 |
| A3341 | 0.0 | 70.0 | 20.0 | 10.0 | 14.536 | O | 1 |
| A3342 | 16.0 | 49.0 | 25.0 | 10.0 | 19.255 | X | 1 |
| A3343 | 15.2 | 49.8 | 25.0 | 10.0 | 19.015 | X | 1 |
| A3344 | 15.1 | 49.9 | 25.0 | 10.0 | 18.985 | O | 1 |
| A3345 | 15.0 | 50.0 | 25.0 | 10.0 | 18.955 | O | 1 |
| A3346 | 10.0 | 55.0 | 25.0 | 10.0 | 17.450 | O | 1 |
| A3347 | 9.0 | 56.0 | 25.0 | 10.0 | 17.150 | O | 1 |
| A3348 | 8.0 | 57.0 | 25.0 | 10.0 | 16.849 | O | 1 |
| A3349 | 7.0 | 58.0 | 25.0 | 10.0 | 16.548 | O | 1 |
| A3350 | 6.0 | 59.0 | 25.0 | 10.0 | 16.247 | O | 1 |
| A3351 | 5.0 | 60.0 | 25.0 | 10.0 | 15.946 | O | 1 |
| A3352 | 4.0 | 61.0 | 25.0 | 10.0 | 15.645 | O | 1 |
| A3353 | 3.0 | 62.0 | 25.0 | 10.0 | 15.324 | O | 1 |
| A3354 | 2.0 | 63.0 | 25.0 | 10.0 | 14.969 | O | 1 |
| A3355 | 1.0 | 64.0 | 25.0 | 10.0 | 14.615 | O | 1 |
| A3356 | 0.0 | 65.0 | 25.0 | 10.0 | 14.260 | O | 1 |
| A3357 | 16.0 | 44.0 | 30.0 | 10.0 | 19.005 | X | 1 |
| A3358 | 15.9 | 44.1 | 30.0 | 10.0 | 18.975 | O | 1 |
| A3359 | 15.0 | 45.0 | 30.0 | 10.0 | 18.705 | O | 1 |
| A3360 | 10.0 | 50.0 | 30.0 | 10.0 | 17.200 | O | 1 |
| A3361 | 9.0 | 51.0 | 30.0 | 10.0 | 16.900 | O | 1 |
| A3362 | 8.0 | 52.0 | 30.0 | 10.0 | 16.599 | O | 1 |
| A3363 | 7.0 | 53.0 | 30.0 | 10.0 | 16.298 | O | 1 |
| A3364 | 6.0 | 54.0 | 30.0 | 10.0 | 15.997 | O | 1 |
| A3365 | 5.0 | 55.0 | 30.0 | 10.0 | 15.696 | O | 1 |
| A3366 | 4.0 | 56.0 | 30.0 | 10.0 | 15.395 | O | 1 |

[Table 281]

| | | | | | | | |
|---|---|---|---|---|---|---|---|
| A3367 | 3.0 | 57.0 | 30.0 | 10.0 | 15.048 | O | 1 |
| A3368 | 2.0 | 58.0 | 30.0 | 10.0 | 14.693 | O | 1 |
| A3369 | 1.0 | 59.0 | 30.0 | 10.0 | 14.339 | O | 1 |
| A3370 | 0.0 | 60.0 | 30.0 | 10.0 | 13.984 | O | 1 |
| A3371 | 17.0 | 38.0 | 35.0 | 10.0 | 19.056 | X | 1 |
| A3372 | 16.9 | 38.1 | 35.0 | 10.0 | 19.026 | X | 1 |
| A3373 | 16.8 | 38.2 | 35.0 | 10.0 | 18.996 | O | 1 |
| A3374 | 15.0 | 40.0 | 35.0 | 10.0 | 18.455 | O | 1 |
| A3375 | 10.0 | 45.0 | 35.0 | 10.0 | 16.951 | O | 1 |
| A3376 | 9.0 | 46.0 | 35.0 | 10.0 | 16.650 | O | 1 |
| A3377 | 8.0 | 47.0 | 35.0 | 10.0 | 16.349 | O | 1 |
| A3378 | 7.0 | 48.0 | 35.0 | 10.0 | 16.048 | O | 1 |
| A3379 | 6.0 | 49.0 | 35.0 | 10.0 | 15.747 | O | 1 |
| A3380 | 5.0 | 50.0 | 35.0 | 10.0 | 15.446 | O | 1 |
| A3381 | 4.0 | 51.0 | 35.0 | 10.0 | 15.127 | O | 1 |
| A3382 | 3.0 | 52.0 | 35.0 | 10.0 | 14.772 | O | 1 |
| A3383 | 2.0 | 53.0 | 35.0 | 10.0 | 14.417 | O | 1 |
| A3384 | 1.0 | 54.0 | 35.0 | 10.0 | 14.063 | O | 1 |
| A3385 | 0.0 | 55.0 | 35.0 | 10.0 | 13.708 | O | 1 |
| A3386 | 18.0 | 32.0 | 40.0 | 10.0 | 19.107 | X | 1 |
| A3387 | 17.7 | 32.3 | 40.0 | 10.0 | 19.017 | X | 1 |
| A3388 | 17.6 | 32.4 | 40.0 | 10.0 | 18.987 | O | 1 |
| A3389 | 17.0 | 33.0 | 40.0 | 10.0 | 18.806 | O | 1 |
| A3390 | 15.0 | 35.0 | 40.0 | 10.0 | 18.205 | O | 1 |
| A3391 | 10.0 | 40.0 | 40.0 | 10.0 | 16.701 | O | 1 |
| A3392 | 9.0 | 41.0 | 40.0 | 10.0 | 16.400 | O | 1 |
| A3393 | 8.0 | 42.0 | 40.0 | 10.0 | 16.099 | O | 1 |
| A3394 | 7.0 | 43.0 | 40.0 | 10.0 | 15.798 | O | 1 |
| A3395 | 6.0 | 44.0 | 40.0 | 10.0 | 15.497 | O | 1 |
| A3396 | 5.0 | 45.0 | 40.0 | 10.0 | 15.196 | O | 1 |
| A3397 | 4.0 | 46.0 | 40.0 | 10.0 | 14.851 | O | 1 |
| A3398 | 3.0 | 47.0 | 40.0 | 10.0 | 14.496 | O | 1 |
| A3399 | 2.0 | 48.0 | 40.0 | 10.0 | 14.141 | O | 1 |
| A3400 | 1.0 | 49.0 | 40.0 | 10.0 | 13.787 | O | 1 |
| A3401 | 0.0 | 50.0 | 40.0 | 10.0 | 13.432 | O | 1 |
| A3402 | 19.0 | 26.0 | 45.0 | 10.0 | 19.158 | X | 1 |
| A3403 | 18.5 | 26.5 | 45.0 | 10.0 | 19.008 | X | 1 |
| A3404 | 18.4 | 26.6 | 45.0 | 10.0 | 18.978 | O | 1 |
| A3405 | 18.0 | 27.0 | 45.0 | 10.0 | 18.857 | O | 1 |
| A3406 | 15.0 | 30.0 | 45.0 | 10.0 | 17.955 | O | 1 |
| A3407 | 10.0 | 35.0 | 45.0 | 10.0 | 16.451 | O | 1 |
| A3408 | 9.0 | 36.0 | 45.0 | 10.0 | 16.150 | O | 1 |
| A3409 | 8.0 | 37.0 | 45.0 | 10.0 | 15.849 | O | 1 |
| A3410 | 7.0 | 38.0 | 45.0 | 10.0 | 15.548 | O | 1 |
| A3411 | 6.0 | 39.0 | 45.0 | 10.0 | 15.247 | O | 1 |
| A3412 | 5.0 | 40.0 | 45.0 | 10.0 | 14.929 | O | 1 |
| A3413 | 4.0 | 41.0 | 45.0 | 10.0 | 14.575 | O | 1 |
| A3414 | 3.0 | 42.0 | 45.0 | 10.0 | 14.220 | O | 1 |
| A3415 | 2.0 | 43.0 | 45.0 | 10.0 | 13.865 | O | 1 |
| A3416 | 1.0 | 44.0 | 45.0 | 10.0 | 13.511 | O | 1 |

[Table 282]

| | | | | | | | |
|---|---|---|---|---|---|---|---|
| A3417 | 0.0 | 45.0 | 45.0 | 10.0 | 13.156 | O | 1 |
| A3418 | 20.0 | 20.0 | 50.0 | 10.0 | 19.209 | X | 1 |
| A3419 | 19.4 | 20.6 | 50.0 | 10.0 | 19.028 | X | 1 |
| A3420 | 19.3 | 20.7 | 50.0 | 10.0 | 18.998 | O | 1 |
| A3421 | 19.0 | 21.0 | 50.0 | 10.0 | 18.908 | O | 1 |
| A3422 | 15.0 | 25.0 | 50.0 | 10.0 | 17.705 | O | 1 |
| A3423 | 10.0 | 30.0 | 50.0 | 10.0 | 16.201 | O | 1 |
| A3424 | 9.0 | 31.0 | 50.0 | 10.0 | 15.900 | O | 1 |
| A3425 | 8.0 | 32.0 | 50.0 | 10.0 | 15.599 | O | 1 |
| A3426 | 7.0 | 33.0 | 50.0 | 10.0 | 15.298 | O | 1 |
| A3427 | 6.0 | 34.0 | 50.0 | 10.0 | 14.997 | O | 1 |
| A3428 | 5.0 | 35.0 | 50.0 | 10.0 | 14.653 | O | 1 |
| A3429 | 4.0 | 36.0 | 50.0 | 10.0 | 14.299 | O | 1 |
| A3430 | 3.0 | 37.0 | 50.0 | 10.0 | 13.944 | O | 1 |
| A3431 | 2.0 | 38.0 | 50.0 | 10.0 | 13.589 | O | 1 |
| A3432 | 1.0 | 39.0 | 50.0 | 10.0 | 13.235 | O | 1 |
| A3433 | 0.0 | 40.0 | 50.0 | 10.0 | 12.880 | O | 1 |
| A3434 | 21.0 | 14.0 | 55.0 | 10.0 | 19.260 | X | 1 |
| A3435 | 20.2 | 14.8 | 55.0 | 10.0 | 19.019 | X | 1 |
| A3436 | 20.1 | 14.9 | 55.0 | 10.0 | 18.989 | O | 1 |
| A3437 | 20.0 | 15.0 | 55.0 | 10.0 | 18.959 | O | 1 |
| A3438 | 15.0 | 20.0 | 55.0 | 10.0 | 17.455 | O | 1 |
| A3439 | 10.0 | 25.0 | 55.0 | 10.0 | 15.951 | O | 1 |
| A3440 | 9.0 | 26.0 | 55.0 | 10.0 | 15.650 | O | 1 |
| A3441 | 8.0 | 27.0 | 55.0 | 10.0 | 15.349 | O | 1 |
| A3442 | 7.0 | 28.0 | 55.0 | 10.0 | 15.048 | O | 1 |
| A3443 | 6.0 | 29.0 | 55.0 | 10.0 | 14.732 | O | 1 |
| A3444 | 5.0 | 30.0 | 55.0 | 10.0 | 14.377 | O | 1 |
| A3445 | 4.0 | 31.0 | 55.0 | 10.0 | 14.023 | O | 1 |
| A3446 | 3.0 | 32.0 | 55.0 | 10.0 | 13.668 | O | 1 |
| A3447 | 2.0 | 33.0 | 55.0 | 10.0 | 13.313 | O | 1 |
| A3448 | 1.0 | 34.0 | 55.0 | 10.0 | 12.959 | O | 1 |
| A3449 | 0.0 | 35.0 | 55.0 | 10.0 | 12.604 | O | 1 |
| A3450 | 21.0 | 9.0 | 60.0 | 10.0 | 19.010 | X | 1 |
| A3451 | 20.9 | 9.1 | 60.0 | 10.0 | 18.980 | O | 1 |
| A3452 | 20.0 | 10.0 | 60.0 | 10.0 | 18.709 | O | 1 |
| A3453 | 15.0 | 15.0 | 60.0 | 10.0 | 17.205 | O | 1 |
| A3454 | 10.0 | 20.0 | 60.0 | 10.0 | 15.701 | O | 1 |
| A3455 | 9.0 | 21.0 | 60.0 | 10.0 | 15.400 | O | 1 |
| A3456 | 8.0 | 22.0 | 60.0 | 10.0 | 15.099 | O | 1 |
| A3457 | 7.0 | 23.0 | 60.0 | 10.0 | 14.798 | O | 1 |
| A3458 | 6.0 | 24.0 | 60.0 | 10.0 | 14.456 | O | 1 |
| A3459 | 5.0 | 25.0 | 60.0 | 10.0 | 14.101 | O | 1 |
| A3460 | 4.0 | 26.0 | 60.0 | 10.0 | 13.747 | O | 1 |
| A3461 | 3.0 | 27.0 | 60.0 | 10.0 | 13.392 | O | 1 |
| A3462 | 2.0 | 28.0 | 60.0 | 10.0 | 13.037 | O | 1 |
| A3463 | 1.0 | 29.0 | 60.0 | 10.0 | 12.683 | O | 1 |
| A3464 | 0.0 | 30.0 | 60.0 | 10.0 | 12.328 | O | 1 |
| A3465 | 22.0 | 3.0 | 65.0 | 10.0 | 19.061 | X | 1 |
| A3466 | 21.8 | 3.2 | 65.0 | 10.0 | 19.001 | X | 1 |

[Table 283]

| A3467 | 21.7 | 3.3 | 65.0 | 10.0 | 18.971 | O | 1 |
|---|---|---|---|---|---|---|---|
| A3468 | 21.0 | 4.0 | 65.0 | 10.0 | 18.760 | O | 1 |
| A3469 | 20.0 | 5.0 | 65.0 | 10.0 | 18.459 | O | 1 |
| A3470 | 15.0 | 10.0 | 65.0 | 10.0 | 16.955 | O | 1 |
| A3471 | 10.0 | 5.0 | 65.0 | 20.0 | 14.892 | O | 1 |
| A3472 | 9.0 | 6.0 | 65.0 | 20.0 | 14.591 | O | 1 |
| A3473 | 8.0 | 7.0 | 65.0 | 20.0 | 14.278 | O | 1 |
| A3474 | 7.0 | 8.0 | 65.0 | 20.0 | 13.924 | O | 1 |
| A3475 | 6.0 | 9.0 | 65.0 | 20.0 | 13.569 | O | 1 |
| A3476 | 5.0 | 10.0 | 65.0 | 20.0 | 13.214 | O | 1 |
| A3477 | 4.0 | 11.0 | 65.0 | 20.0 | 12.859 | O | 1 |
| A3478 | 3.0 | 12.0 | 65.0 | 20.0 | 12.505 | O | 1 |
| A3479 | 2.0 | 13.0 | 65.0 | 20.0 | 12.150 | O | 1 |
| A3480 | 1.0 | 14.0 | 65.0 | 20.0 | 11.795 | O | 1 |
| A3481 | 0.0 | 15.0 | 65.0 | 20.0 | 11.441 | O | 1 |
| A3482 | 14.0 | 61.0 | 5.0 | 20.0 | 19.094 | X | 1 |
| A3483 | 13.7 | 61.3 | 5.0 | 20.0 | 19.004 | X | 1 |
| A3484 | 13.6 | 61.4 | 5.0 | 20.0 | 18.974 | O | 1 |
| A3485 | 13.0 | 62.0 | 5.0 | 20.0 | 18.793 | O | 1 |
| A3486 | 10.0 | 65.0 | 5.0 | 20.0 | 17.891 | O | 1 |
| A3487 | 9.0 | 66.0 | 5.0 | 20.0 | 17.590 | O | 1 |
| A3488 | 8.0 | 67.0 | 5.0 | 20.0 | 17.289 | O | 1 |
| A3489 | 7.0 | 68.0 | 5.0 | 20.0 | 16.988 | O | 1 |
| A3490 | 6.0 | 69.0 | 5.0 | 20.0 | 16.688 | O | 1 |
| A3491 | 5.0 | 70.0 | 5.0 | 20.0 | 16.387 | O | 1 |
| A3492 | 4.0 | 71.0 | 5.0 | 20.0 | 16.086 | O | 1 |
| A3493 | 3.0 | 72.0 | 5.0 | 20.0 | 15.785 | O | 1 |
| A3494 | 2.0 | 73.0 | 5.0 | 20.0 | 15.462 | O | 1 |
| A3495 | 1.0 | 74.0 | 5.0 | 20.0 | 15.107 | O | 1 |
| A3496 | 0.0 | 75.0 | 5.0 | 20.0 | 14.752 | O | 1 |
| A3497 | 15.0 | 55.0 | 10.0 | 20.0 | 19.145 | X | 1 |
| A3498 | 14.6 | 55.4 | 10.0 | 20.0 | 19.025 | X | 1 |
| A3499 | 14.5 | 55.5 | 10.0 | 20.0 | 18.995 | O | 1 |
| A3500 | 14.0 | 56.0 | 10.0 | 20.0 | 18.844 | O | 1 |
| A3501 | 10.0 | 60.0 | 10.0 | 20.0 | 17.641 | O | 1 |
| A3502 | 9.0 | 61.0 | 10.0 | 20.0 | 17.340 | O | 1 |
| A3503 | 8.0 | 62.0 | 10.0 | 20.0 | 17.039 | O | 1 |
| A3504 | 7.0 | 63.0 | 10.0 | 20.0 | 16.739 | O | 1 |
| A3505 | 6.0 | 64.0 | 10.0 | 20.0 | 16.438 | O | 1 |
| A3506 | 5.0 | 65.0 | 10.0 | 20.0 | 16.137 | O | 1 |
| A3507 | 4.0 | 66.0 | 10.0 | 20.0 | 15.836 | O | 1 |
| A3508 | 3.0 | 67.0 | 10.0 | 20.0 | 15.535 | O | 1 |
| A3509 | 2.0 | 68.0 | 10.0 | 20.0 | 15.186 | O | 1 |
| A3510 | 1.0 | 69.0 | 10.0 | 20.0 | 14.831 | O | 1 |
| A3511 | 0.0 | 70.0 | 10.0 | 20.0 | 14.476 | O | 1 |
| A3512 | 16.0 | 49.0 | 15.0 | 20.0 | 19.196 | X | 1 |
| A3513 | 15.4 | 49.6 | 15.0 | 20.0 | 19.016 | X | 1 |
| A3514 | 15.3 | 49.7 | 15.0 | 20.0 | 18.985 | O | 1 |
| A3515 | 15.0 | 50.0 | 15.0 | 20.0 | 18.895 | O | 1 |
| A3516 | 10.0 | 55.0 | 15.0 | 20.0 | 17.391 | O | 1 |

[Table 284]

| A3517 | 9.0 | 56.0 | 15.0 | 20.0 | 17.090 | O | 1 |
|---|---|---|---|---|---|---|---|
| A3518 | 8.0 | 57.0 | 15.0 | 20.0 | 16.789 | O | 1 |
| A3519 | 7.0 | 58.0 | 15.0 | 20.0 | 16.489 | O | 1 |
| A3520 | 6.0 | 59.0 | 15.0 | 20.0 | 16.188 | O | 1 |
| A3521 | 5.0 | 60.0 | 15.0 | 20.0 | 15.887 | O | 1 |
| A3522 | 4.0 | 61.0 | 15.0 | 20.0 | 15.586 | O | 1 |
| A3523 | 3.0 | 62.0 | 15.0 | 20.0 | 15.265 | O | 1 |
| A3524 | 2.0 | 63.0 | 15.0 | 20.0 | 14.910 | O | 1 |
| A3525 | 1.0 | 64.0 | 15.0 | 20.0 | 14.555 | O | 1 |
| A3526 | 0.0 | 65.0 | 15.0 | 20.0 | 14.201 | O | 1 |
| A3527 | 17.0 | 43.0 | 20.0 | 20.0 | 19.247 | X | 1 |
| A3528 | 16.2 | 43.8 | 20.0 | 20.0 | 19.006 | X | 1 |
| A3529 | 16.1 | 43.9 | 20.0 | 20.0 | 18.976 | O | 1 |
| A3530 | 16.0 | 44.0 | 20.0 | 20.0 | 18.946 | O | 1 |
| A3531 | 15.0 | 45.0 | 20.0 | 20.0 | 18.645 | O | 1 |
| A3532 | 10.0 | 50.0 | 20.0 | 20.0 | 17.141 | O | 1 |
| A3533 | 9.0 | 51.0 | 20.0 | 20.0 | 16.840 | O | 1 |
| A3534 | 8.0 | 52.0 | 20.0 | 20.0 | 16.539 | O | 1 |
| A3535 | 7.0 | 53.0 | 20.0 | 20.0 | 16.239 | O | 1 |
| A3536 | 6.0 | 54.0 | 20.0 | 20.0 | 15.938 | O | 1 |
| A3537 | 5.0 | 55.0 | 20.0 | 20.0 | 15.637 | O | 1 |
| A3538 | 4.0 | 56.0 | 20.0 | 20.0 | 15.336 | O | 1 |
| A3539 | 3.0 | 57.0 | 20.0 | 20.0 | 14.989 | O | 1 |
| A3540 | 2.0 | 58.0 | 20.0 | 20.0 | 14.634 | O | 1 |
| A3541 | 1.0 | 59.0 | 20.0 | 20.0 | 14.279 | O | 1 |
| A3542 | 0.0 | 60.0 | 20.0 | 20.0 | 13.925 | O | 1 |
| A3543 | 18.0 | 37.0 | 25.0 | 20.0 | 19.298 | X | 1 |
| A3544 | 17.1 | 37.9 | 25.0 | 20.0 | 19.027 | X | 1 |
| A3545 | 17.0 | 38.0 | 25.0 | 20.0 | 18.997 | O | 1 |
| A3546 | 15.0 | 40.0 | 25.0 | 20.0 | 18.395 | O | 1 |
| A3547 | 10.0 | 45.0 | 25.0 | 20.0 | 16.891 | O | 1 |
| A3548 | 9.0 | 46.0 | 25.0 | 20.0 | 16.590 | O | 1 |
| A3549 | 8.0 | 47.0 | 25.0 | 20.0 | 16.290 | O | 1 |
| A3550 | 7.0 | 48.0 | 25.0 | 20.0 | 15.989 | O | 1 |
| A3551 | 6.0 | 49.0 | 25.0 | 20.0 | 15.688 | O | 1 |
| A3552 | 5.0 | 50.0 | 25.0 | 20.0 | 15.387 | O | 1 |
| A3553 | 4.0 | 51.0 | 25.0 | 20.0 | 15.067 | O | 1 |
| A3554 | 3.0 | 52.0 | 25.0 | 20.0 | 14.713 | O | 1 |
| A3555 | 2.0 | 53.0 | 25.0 | 20.0 | 14.358 | O | 1 |
| A3556 | 1.0 | 54.0 | 25.0 | 20.0 | 14.003 | O | 1 |
| A3557 | 0.0 | 55.0 | 25.0 | 20.0 | 13.649 | O | 1 |
| A3558 | 18.0 | 32.0 | 30.0 | 20.0 | 19.048 | X | 1 |
| A3559 | 17.9 | 32.1 | 30.0 | 20.0 | 19.018 | X | 1 |
| A3560 | 17.8 | 32.2 | 30.0 | 20.0 | 18.988 | O | 1 |
| A3561 | 17.0 | 33.0 | 30.0 | 20.0 | 18.747 | O | 1 |
| A3562 | 15.0 | 35.0 | 30.0 | 20.0 | 18.145 | O | 1 |
| A3563 | 10.0 | 40.0 | 30.0 | 20.0 | 16.641 | O | 1 |
| A3564 | 9.0 | 41.0 | 30.0 | 20.0 | 16.340 | O | 1 |
| A3565 | 8.0 | 42.0 | 30.0 | 20.0 | 16.040 | O | 1 |
| A3566 | 7.0 | 43.0 | 30.0 | 20.0 | 15.739 | O | 1 |

[Table 285]

| A3567 | 6.0 | 44.0 | 30.0 | 20.0 | 15.438 | O | 1 |
|---|---|---|---|---|---|---|---|
| A3568 | 5.0 | 45.0 | 30.0 | 20.0 | 15.137 | O | 1 |
| A3569 | 4.0 | 46.0 | 30.0 | 20.0 | 14.791 | O | 1 |
| A3570 | 3.0 | 47.0 | 30.0 | 20.0 | 14.437 | O | 1 |
| A3571 | 2.0 | 48.0 | 30.0 | 20.0 | 14.082 | O | 1 |
| A3572 | 1.0 | 49.0 | 30.0 | 20.0 | 13.727 | O | 1 |
| A3573 | 0.0 | 50.0 | 30.0 | 20.0 | 13.373 | O | 1 |
| A3574 | 19.0 | 26.0 | 35.0 | 20.0 | 19.099 | X | 1 |
| A3575 | 18.7 | 26.3 | 35.0 | 20.0 | 19.008 | X | 1 |
| A3576 | 18.6 | 26.4 | 35.0 | 20.0 | 18.978 | O | 1 |
| A3577 | 18.0 | 27.0 | 35.0 | 20.0 | 18.798 | O | 1 |
| A3578 | 15.0 | 30.0 | 35.0 | 20.0 | 17.895 | O | 1 |
| A3579 | 10.0 | 35.0 | 35.0 | 20.0 | 16.391 | O | 1 |
| A3580 | 9.0 | 36.0 | 35.0 | 20.0 | 16.090 | O | 1 |
| A3581 | 8.0 | 37.0 | 35.0 | 20.0 | 15.790 | O | 1 |
| A3582 | 7.0 | 38.0 | 35.0 | 20.0 | 15.489 | O | 1 |
| A3583 | 6.0 | 39.0 | 35.0 | 20.0 | 15.188 | O | 1 |
| A3584 | 5.0 | 40.0 | 35.0 | 20.0 | 14.870 | O | 1 |
| A3585 | 4.0 | 41.0 | 35.0 | 20.0 | 14.515 | O | 1 |
| A3586 | 3.0 | 42.0 | 35.0 | 20.0 | 14.161 | O | 1 |
| A3587 | 2.0 | 43.0 | 35.0 | 20.0 | 13.806 | O | 1 |
| A3588 | 1.0 | 44.0 | 35.0 | 20.0 | 13.451 | O | 1 |
| A3589 | 0.0 | 45.0 | 35.0 | 20.0 | 13.097 | O | 1 |
| A3590 | 20.0 | 20.0 | 40.0 | 20.0 | 19.150 | X | 1 |
| A3591 | 19.6 | 20.4 | 40.0 | 20.0 | 19.029 | X | 1 |
| A3592 | 19.5 | 20.5 | 40.0 | 20.0 | 18.999 | O | 1 |
| A3593 | 19.0 | 21.0 | 40.0 | 20.0 | 18.849 | O | 1 |
| A3594 | 15.0 | 25.0 | 40.0 | 20.0 | 17.645 | O | 1 |
| A3595 | 10.0 | 30.0 | 40.0 | 20.0 | 16.141 | O | 1 |
| A3596 | 9.0 | 31.0 | 40.0 | 20.0 | 15.840 | O | 1 |
| A3597 | 8.0 | 32.0 | 40.0 | 20.0 | 15.540 | O | 1 |
| A3598 | 7.0 | 33.0 | 40.0 | 20.0 | 15.239 | O | 1 |
| A3599 | 6.0 | 34.0 | 40.0 | 20.0 | 14.938 | O | 1 |
| A3600 | 5.0 | 35.0 | 40.0 | 20.0 | 14.594 | O | 1 |
| A3601 | 4.0 | 36.0 | 40.0 | 20.0 | 14.239 | O | 1 |
| A3602 | 3.0 | 37.0 | 40.0 | 20.0 | 13.885 | O | 1 |
| A3603 | 2.0 | 38.0 | 40.0 | 20.0 | 13.530 | O | 1 |
| A3604 | 1.0 | 39.0 | 40.0 | 20.0 | 13.175 | O | 1 |
| A3605 | 0.0 | 40.0 | 40.0 | 20.0 | 12.821 | O | 1 |
| A3606 | 21.0 | 14.0 | 45.0 | 20.0 | 19.201 | X | 1 |
| A3607 | 20.4 | 14.6 | 45.0 | 20.0 | 19.020 | X | 1 |
| A3608 | 20.3 | 14.7 | 45.0 | 20.0 | 18.990 | O | 1 |
| A3609 | 20.0 | 15.0 | 45.0 | 20.0 | 18.900 | O | 1 |
| A3610 | 15.0 | 20.0 | 45.0 | 20.0 | 17.396 | O | 1 |
| A3611 | 10.0 | 25.0 | 45.0 | 20.0 | 15.891 | O | 1 |
| A3612 | 9.0 | 26.0 | 45.0 | 20.0 | 15.591 | O | 1 |
| A3613 | 8.0 | 27.0 | 45.0 | 20.0 | 15.290 | O | 1 |
| A3614 | 7.0 | 28.0 | 45.0 | 20.0 | 14.989 | O | 1 |
| A3615 | 6.0 | 29.0 | 45.0 | 20.0 | 14.673 | O | 1 |
| A3616 | 5.0 | 30.0 | 45.0 | 20.0 | 14.318 | O | 1 |

[Table 286]

| | | | | | | | |
|---|---|---|---|---|---|---|---|
| A3617 | 4.0 | 31.0 | 45.0 | 20.0 | 13.963 | O | 1 |
| A3618 | 3.0 | 32.0 | 45.0 | 20.0 | 13.609 | O | 1 |
| A3619 | 2.0 | 33.0 | 45.0 | 20.0 | 13.254 | O | 1 |
| A3620 | 1.0 | 34.0 | 45.0 | 20.0 | 12.899 | O | 1 |
| A3621 | 0.0 | 35.0 | 45.0 | 20.0 | 12.545 | O | 1 |
| A3622 | 22.0 | 8.0 | 50.0 | 20.0 | 19.251 | X | 1 |
| A3623 | 21.2 | 8.8 | 50.0 | 20.0 | 19.011 | X | 1 |
| A3624 | 21.1 | 8.9 | 50.0 | 20.0 | 18.981 | O | 1 |
| A3625 | 21.0 | 9.0 | 50.0 | 20.0 | 18.951 | O | 1 |
| A3626 | 20.0 | 10.0 | 50.0 | 20.0 | 18.650 | O | 1 |
| A3627 | 15.0 | 15.0 | 50.0 | 20.0 | 17.146 | O | 1 |
| A3628 | 10.0 | 20.0 | 50.0 | 20.0 | 15.641 | O | 1 |
| A3629 | 9.0 | 21.0 | 50.0 | 20.0 | 15.341 | O | 1 |
| A3630 | 8.0 | 22.0 | 50.0 | 20.0 | 15.040 | O | 1 |
| A3631 | 7.0 | 23.0 | 50.0 | 20.0 | 14.739 | O | 1 |
| A3632 | 6.0 | 24.0 | 50.0 | 20.0 | 14.397 | O | 1 |
| A3633 | 5.0 | 25.0 | 50.0 | 20.0 | 14.042 | O | 1 |
| A3634 | 4.0 | 26.0 | 50.0 | 20.0 | 13.687 | O | 1 |
| A3635 | 3.0 | 27.0 | 50.0 | 20.0 | 13.333 | O | 1 |
| A3636 | 2.0 | 28.0 | 50.0 | 20.0 | 12.978 | O | 1 |
| A3637 | 1.0 | 29.0 | 50.0 | 20.0 | 12.623 | O | 1 |
| A3638 | 0.0 | 30.0 | 50.0 | 20.0 | 12.269 | O | 1 |
| A3639 | 22.0 | 3.0 | 55.0 | 20.0 | 19.001 | X | 1 |
| A3640 | 21.9 | 3.1 | 55.0 | 20.0 | 18.971 | O | 1 |
| A3641 | 21.0 | 4.0 | 55.0 | 20.0 | 18.701 | O | 1 |
| A3642 | 20.0 | 5.0 | 55.0 | 20.0 | 18.400 | O | 1 |
| A3643 | 15.0 | 10.0 | 55.0 | 20.0 | 16.896 | O | 1 |
| A3644 | 10.0 | 15.0 | 55.0 | 20.0 | 15.391 | O | 1 |
| A3645 | 9.0 | 16.0 | 55.0 | 20.0 | 15.091 | O | 1 |
| A3646 | 8.0 | 17.0 | 55.0 | 20.0 | 14.790 | O | 1 |
| A3647 | 7.0 | 18.0 | 55.0 | 20.0 | 14.476 | O | 1 |
| A3648 | 6.0 | 19.0 | 55.0 | 20.0 | 14.121 | O | 1 |
| A3649 | 5.0 | 20.0 | 55.0 | 20.0 | 13.766 | O | 1 |
| A3650 | 4.0 | 21.0 | 55.0 | 20.0 | 13.411 | O | 1 |
| A3651 | 3.0 | 22.0 | 55.0 | 20.0 | 13.057 | O | 1 |
| A3652 | 2.0 | 23.0 | 55.0 | 20.0 | 12.702 | O | 1 |
| A3653 | 1.0 | 24.0 | 55.0 | 20.0 | 12.347 | O | 1 |
| A3654 | 0.0 | 25.0 | 55.0 | 20.0 | 11.993 | O | 1 |
| A3655 | 16.0 | 49.0 | 5.0 | 30.0 | 19.137 | X | 1 |
| A3656 | 15.6 | 49.4 | 5.0 | 30.0 | 19.016 | X | 1 |
| A3657 | 15.5 | 49.5 | 5.0 | 30.0 | 18.986 | O | 1 |
| A3658 | 15.0 | 50.0 | 5.0 | 30.0 | 18.836 | O | 1 |
| A3659 | 10.0 | 55.0 | 5.0 | 30.0 | 17.332 | O | 1 |
| A3660 | 9.0 | 56.0 | 5.0 | 30.0 | 17.031 | O | 1 |
| A3661 | 8.0 | 57.0 | 5.0 | 30.0 | 16.730 | O | 1 |
| A3662 | 7.0 | 58.0 | 5.0 | 30.0 | 16.429 | O | 1 |
| A3663 | 6.0 | 59.0 | 5.0 | 30.0 | 16.128 | O | 1 |
| A3664 | 5.0 | 60.0 | 5.0 | 30.0 | 15.828 | O | 1 |
| A3665 | 4.0 | 61.0 | 5.0 | 30.0 | 15.527 | O | 1 |
| A3666 | 3.0 | 62.0 | 5.0 | 30.0 | 15.205 | O | 1 |

[Table 287]

| | | | | | | | |
|---|---|---|---|---|---|---|---|
| A3667 | 2.0 | 63.0 | 5.0 | 30.0 | 14.851 | O | 1 |
| A3668 | 1.0 | 64.0 | 5.0 | 30.0 | 14.496 | O | 1 |
| A3669 | 0.0 | 65.0 | 5.0 | 30.0 | 14.141 | O | 1 |
| A3670 | 17.0 | 43.0 | 10.0 | 30.0 | 19.188 | X | 1 |
| A3671 | 16.4 | 43.6 | 10.0 | 30.0 | 19.007 | X | 1 |
| A3672 | 16.3 | 43.7 | 10.0 | 30.0 | 18.977 | O | 1 |
| A3673 | 16.0 | 44.0 | 10.0 | 30.0 | 18.887 | O | 1 |
| A3674 | 15.0 | 45.0 | 10.0 | 30.0 | 18.586 | O | 1 |
| A3675 | 10.0 | 50.0 | 10.0 | 30.0 | 17.082 | O | 1 |
| A3676 | 9.0 | 51.0 | 10.0 | 30.0 | 16.781 | O | 1 |
| A3677 | 8.0 | 52.0 | 10.0 | 30.0 | 16.480 | O | 1 |
| A3678 | 7.0 | 53.0 | 10.0 | 30.0 | 16.179 | O | 1 |
| A3679 | 6.0 | 54.0 | 10.0 | 30.0 | 15.878 | O | 1 |
| A3680 | 5.0 | 55.0 | 10.0 | 30.0 | 15.578 | O | 1 |
| A3681 | 4.0 | 56.0 | 10.0 | 30.0 | 15.277 | O | 1 |
| A3682 | 3.0 | 57.0 | 10.0 | 30.0 | 14.929 | O | 1 |
| A3683 | 2.0 | 58.0 | 10.0 | 30.0 | 14.575 | O | 1 |
| A3684 | 1.0 | 59.0 | 10.0 | 30.0 | 14.220 | O | 1 |
| A3685 | 0.0 | 60.0 | 10.0 | 30.0 | 13.865 | O | 1 |
| A3686 | 18.0 | 37.0 | 15.0 | 30.0 | 19.238 | X | 1 |
| A3687 | 17.3 | 37.7 | 15.0 | 30.0 | 19.028 | X | 1 |
| A3688 | 17.2 | 37.8 | 15.0 | 30.0 | 18.998 | O | 1 |
| A3689 | 17.0 | 38.0 | 15.0 | 30.0 | 18.938 | O | 1 |
| A3690 | 15.0 | 40.0 | 15.0 | 30.0 | 18.336 | O | 1 |
| A3691 | 10.0 | 45.0 | 15.0 | 30.0 | 16.832 | O | 1 |
| A3692 | 9.0 | 46.0 | 15.0 | 30.0 | 16.531 | O | 1 |
| A3693 | 8.0 | 47.0 | 15.0 | 30.0 | 16.230 | O | 1 |
| A3694 | 7.0 | 48.0 | 15.0 | 30.0 | 15.929 | O | 1 |
| A3695 | 6.0 | 49.0 | 15.0 | 30.0 | 15.628 | O | 1 |
| A3696 | 5.0 | 50.0 | 15.0 | 30.0 | 15.328 | O | 1 |
| A3697 | 4.0 | 51.0 | 15.0 | 30.0 | 15.008 | O | 1 |
| A3698 | 3.0 | 52.0 | 15.0 | 30.0 | 14.653 | O | 1 |
| A3699 | 2.0 | 53.0 | 15.0 | 30.0 | 14.299 | O | 1 |
| A3700 | 1.0 | 54.0 | 15.0 | 30.0 | 13.944 | O | 1 |
| A3701 | 0.0 | 55.0 | 15.0 | 30.0 | 13.589 | O | 1 |
| A3702 | 19.0 | 31.0 | 20.0 | 30.0 | 19.289 | X | 1 |
| A3703 | 18.1 | 31.9 | 20.0 | 30.0 | 19.019 | X | 1 |
| A3704 | 18.0 | 32.0 | 20.0 | 30.0 | 18.988 | O | 1 |
| A3705 | 15.0 | 35.0 | 20.0 | 30.0 | 18.086 | O | 1 |
| A3706 | 10.0 | 40.0 | 20.0 | 30.0 | 16.582 | O | 1 |
| A3707 | 9.0 | 41.0 | 20.0 | 30.0 | 16.281 | O | 1 |
| A3708 | 8.0 | 42.0 | 20.0 | 30.0 | 15.980 | O | 1 |
| A3709 | 7.0 | 43.0 | 20.0 | 30.0 | 15.679 | O | 1 |
| A3710 | 6.0 | 44.0 | 20.0 | 30.0 | 15.379 | O | 1 |
| A3711 | 5.0 | 45.0 | 20.0 | 30.0 | 15.078 | O | 1 |
| A3712 | 4.0 | 46.0 | 20.0 | 30.0 | 14.732 | O | 1 |
| A3713 | 3.0 | 47.0 | 20.0 | 30.0 | 14.377 | O | 1 |
| A3714 | 2.0 | 48.0 | 20.0 | 30.0 | 14.023 | O | 1 |
| A3715 | 1.0 | 49.0 | 20.0 | 30.0 | 13.668 | O | 1 |
| A3716 | 0.0 | 50.0 | 20.0 | 30.0 | 13.313 | O | 1 |

[Table 288]

| A3717 | 19.0 | 26.0 | 25.0 | 30.0 | 19.039 | X | 1 |
|---|---|---|---|---|---|---|---|
| A3718 | 18.9 | 26.1 | 25.0 | 30.0 | 19.009 | X | 1 |
| A3719 | 18.8 | 26.2 | 25.0 | 30.0 | 18.979 | O | 1 |
| A3720 | 18.0 | 27.0 | 25.0 | 30.0 | 18.739 | O | 1 |
| A3721 | 15.0 | 30.0 | 25.0 | 30.0 | 17.836 | O | 1 |
| A3722 | 10.0 | 35.0 | 25.0 | 30.0 | 16.332 | O | 1 |
| A3723 | 9.0 | 36.0 | 25.0 | 30.0 | 16.031 | O | 1 |
| A3724 | 8.0 | 37.0 | 25.0 | 30.0 | 15.730 | O | 1 |
| A3725 | 7.0 | 38.0 | 25.0 | 30.0 | 15.429 | O | 1 |
| A3726 | 6.0 | 39.0 | 25.0 | 30.0 | 15.129 | O | 1 |
| A3727 | 5.0 | 40.0 | 25.0 | 30.0 | 14.811 | O | 1 |
| A3728 | 4.0 | 41.0 | 25.0 | 30.0 | 14.456 | O | 1 |
| A3729 | 3.0 | 42.0 | 25.0 | 30.0 | 14.101 | O | 1 |
| A3730 | 2.0 | 43.0 | 25.0 | 30.0 | 13.747 | O | 1 |
| A3731 | 1.0 | 39.0 | 30.0 | 30.0 | 13.116 | O | 1 |
| A3732 | 0.0 | 40.0 | 30.0 | 30.0 | 12.761 | O | 1 |
| A3733 | 20.0 | 20.0 | 30.0 | 30.0 | 19.090 | X | 1 |
| A3734 | 19.7 | 20.3 | 30.0 | 30.0 | 19.000 | X | 1 |
| A3735 | 19.6 | 20.4 | 30.0 | 30.0 | 18.970 | O | 1 |
| A3736 | 19.0 | 21.0 | 30.0 | 30.0 | 18.789 | O | 1 |
| A3737 | 15.0 | 25.0 | 30.0 | 30.0 | 17.586 | O | 1 |
| A3738 | 10.0 | 30.0 | 30.0 | 30.0 | 16.082 | O | 1 |
| A3739 | 9.0 | 31.0 | 30.0 | 30.0 | 15.781 | O | 1 |
| A3740 | 8.0 | 32.0 | 30.0 | 30.0 | 15.480 | O | 1 |
| A3741 | 7.0 | 33.0 | 30.0 | 30.0 | 15.179 | O | 1 |
| A3742 | 6.0 | 34.0 | 30.0 | 30.0 | 14.879 | O | 1 |
| A3743 | 5.0 | 35.0 | 30.0 | 30.0 | 14.535 | O | 1 |
| A3744 | 4.0 | 36.0 | 30.0 | 30.0 | 14.180 | O | 1 |
| A3745 | 3.0 | 37.0 | 30.0 | 30.0 | 13.825 | O | 1 |
| A3746 | 2.0 | 38.0 | 30.0 | 30.0 | 13.471 | O | 1 |
| A3747 | 1.0 | 39.0 | 30.0 | 30.0 | 13.116 | O | 1 |
| A3748 | 0.0 | 40.0 | 30.0 | 30.0 | 12.761 | O | 1 |
| A3749 | 21.0 | 14.0 | 35.0 | 30.0 | 19.141 | X | 1 |
| A3750 | 20.6 | 14.4 | 35.0 | 30.0 | 19.021 | X | 1 |
| A3751 | 20.5 | 14.5 | 35.0 | 30.0 | 18.991 | O | 1 |
| A3752 | 20.0 | 15.0 | 35.0 | 30.0 | 18.840 | O | 1 |
| A3753 | 15.0 | 20.0 | 35.0 | 30.0 | 17.336 | O | 1 |
| A3754 | 10.0 | 25.0 | 35.0 | 30.0 | 15.832 | O | 1 |
| A3755 | 9.0 | 26.0 | 35.0 | 30.0 | 15.531 | O | 1 |
| A3756 | 8.0 | 27.0 | 35.0 | 30.0 | 15.230 | O | 1 |
| A3757 | 7.0 | 28.0 | 35.0 | 30.0 | 14.930 | O | 1 |
| A3758 | 6.0 | 29.0 | 35.0 | 30.0 | 14.613 | O | 1 |
| A3759 | 5.0 | 30.0 | 35.0 | 30.0 | 14.259 | O | 1 |
| A3760 | 4.0 | 31.0 | 35.0 | 30.0 | 13.904 | O | 1 |
| A3761 | 3.0 | 32.0 | 35.0 | 30.0 | 13.549 | O | 1 |
| A3762 | 2.0 | 33.0 | 35.0 | 30.0 | 13.195 | O | 1 |
| A3763 | 1.0 | 34.0 | 35.0 | 30.0 | 12.840 | O | 1 |
| A3764 | 0.0 | 35.0 | 35.0 | 30.0 | 12.485 | O | 1 |
| A3765 | 22.0 | 8.0 | 40.0 | 30.0 | 19.192 | X | 1 |
| A3766 | 21.4 | 8.6 | 40.0 | 30.0 | 19.012 | X | 1 |

[Table 289]

| | | | | | | | |
|---|---|---|---|---|---|---|---|
| A3767 | 21.3 | 8.7 | 40.0 | 30.0 | 18.981 | O | 1 |
| A3768 | 21.0 | 9.0 | 40.0 | 30.0 | 18.891 | O | 1 |
| A3769 | 20.0 | 10.0 | 40.0 | 30.0 | 18.590 | O | 1 |
| A3770 | 15.0 | 15.0 | 40.0 | 30.0 | 17.086 | O | 1 |
| A3771 | 10.0 | 20.0 | 40.0 | 30.0 | 15.582 | O | 1 |
| A3772 | 9.0 | 21.0 | 40.0 | 30.0 | 15.281 | O | 1 |
| A3773 | 8.0 | 22.0 | 40.0 | 30.0 | 14.980 | O | 1 |
| A3774 | 7.0 | 23.0 | 40.0 | 30.0 | 14.680 | O | 1 |
| A3775 | 6.0 | 24.0 | 40.0 | 30.0 | 14.337 | O | 1 |
| A3776 | 5.0 | 25.0 | 40.0 | 30.0 | 13.983 | O | 1 |
| A3777 | 4.0 | 26.0 | 40.0 | 30.0 | 13.628 | O | 1 |
| A3778 | 3.0 | 27.0 | 40.0 | 30.0 | 13.273 | O | 1 |
| A3779 | 2.0 | 28.0 | 40.0 | 30.0 | 12.919 | O | 1 |
| A3780 | 1.0 | 29.0 | 40.0 | 30.0 | 12.564 | O | 1 |
| A3781 | 0.0 | 30.0 | 40.0 | 30.0 | 12.209 | O | 1 |
| A3782 | 23.0 | 2.0 | 45.0 | 30.0 | 19.243 | X | 1 |
| A3783 | 22.2 | 2.8 | 45.0 | 30.0 | 19.002 | X | 1 |
| A3784 | 22.1 | 2.9 | 45.0 | 30.0 | 18.972 | O | 1 |
| A3785 | 22.0 | 3.0 | 45.0 | 30.0 | 18.942 | O | 1 |
| A3786 | 20.0 | 5.0 | 45.0 | 30.0 | 18.340 | O | 1 |
| A3787 | 15.0 | 10.0 | 45.0 | 30.0 | 16.836 | O | 1 |
| A3788 | 10.0 | 15.0 | 45.0 | 30.0 | 15.332 | O | 1 |
| A3789 | 9.0 | 16.0 | 45.0 | 30.0 | 15.031 | O | 1 |
| A3790 | 8.0 | 17.0 | 45.0 | 30.0 | 14.730 | O | 1 |
| A3791 | 7.0 | 18.0 | 45.0 | 30.0 | 14.416 | O | 1 |
| A3792 | 6.0 | 19.0 | 45.0 | 30.0 | 14.061 | O | 1 |
| A3793 | 5.0 | 20.0 | 45.0 | 30.0 | 13.707 | O | 1 |
| A3794 | 4.0 | 21.0 | 45.0 | 30.0 | 13.352 | O | 1 |
| A3795 | 3.0 | 22.0 | 45.0 | 30.0 | 12.997 | O | 1 |
| A3796 | 2.0 | 23.0 | 45.0 | 30.0 | 12.643 | O | 1 |
| A3797 | 1.0 | 24.0 | 45.0 | 30.0 | 12.288 | O | 1 |
| A3798 | 0.0 | 25.0 | 45.0 | 30.0 | 11.933 | O | 1 |
| A3799 | 18.0 | 37.0 | 5.0 | 40.0 | 19.179 | X | 1 |
| A3800 | 17.5 | 37.5 | 5.0 | 40.0 | 19.029 | X | 1 |
| A3801 | 17.4 | 37.6 | 5.0 | 40.0 | 18.999 | O | 1 |
| A3802 | 17.0 | 38.0 | 5.0 | 40.0 | 18.878 | O | 1 |
| A3803 | 15.0 | 40.0 | 5.0 | 40.0 | 18.277 | O | 1 |
| A3804 | 10.0 | 45.0 | 5.0 | 40.0 | 16.772 | O | 1 |
| A3805 | 9.0 | 46.0 | 5.0 | 40.0 | 16.472 | O | 1 |
| A3806 | 8.0 | 47.0 | 5.0 | 40.0 | 16.171 | O | 1 |
| A3807 | 7.0 | 48.0 | 5.0 | 40.0 | 15.870 | O | 1 |
| A3808 | 6.0 | 49.0 | 5.0 | 40.0 | 15.569 | O | 1 |
| A3809 | 5.0 | 50.0 | 5.0 | 40.0 | 15.268 | O | 1 |
| A3810 | 4.0 | 51.0 | 5.0 | 40.0 | 14.949 | O | 1 |
| A3811 | 3.0 | 52.0 | 5.0 | 40.0 | 14.594 | O | 1 |
| A3812 | 2.0 | 53.0 | 5.0 | 40.0 | 14.239 | O | 1 |
| A3813 | 1.0 | 54.0 | 5.0 | 40.0 | 13.885 | O | 1 |
| A3814 | 0.0 | 55.0 | 5.0 | 40.0 | 13.530 | O | 1 |
| A3815 | 19.0 | 31.0 | 10.0 | 40.0 | 19.230 | X | 1 |
| A3816 | 18.3 | 31.7 | 10.0 | 40.0 | 19.019 | X | 1 |

[Table 290]

| A3817 | 18.2 | 31.8 | 10.0 | 40.0 | 18.989 | O | 1 |
|---|---|---|---|---|---|---|---|
| A3818 | 18.0 | 32.0 | 10.0 | 40.0 | 18.929 | O | 1 |
| A3819 | 15.0 | 35.0 | 10.0 | 40.0 | 18.027 | O | 1 |
| A3820 | 10.0 | 40.0 | 10.0 | 40.0 | 16.522 | O | 1 |
| A3821 | 9.0 | 41.0 | 10.0 | 40.0 | 16.222 | O | 1 |
| A3822 | 8.0 | 42.0 | 10.0 | 40.0 | 15.921 | O | 1 |
| A3823 | 7.0 | 43.0 | 10.0 | 40.0 | 15.620 | O | 1 |
| A3824 | 6.0 | 44.0 | 10.0 | 40.0 | 15.319 | O | 1 |
| A3825 | 5.0 | 45.0 | 10.0 | 40.0 | 15.018 | O | 1 |
| A3826 | 4.0 | 46.0 | 10.0 | 40.0 | 14.673 | O | 1 |
| A3827 | 3.0 | 47.0 | 10.0 | 40.0 | 14.318 | O | 1 |
| A3828 | 2.0 | 48.0 | 10.0 | 40.0 | 13.963 | O | 1 |
| A3829 | 1.0 | 49.0 | 10.0 | 40.0 | 13.609 | O | 1 |
| A3830 | 0.0 | 50.0 | 10.0 | 40.0 | 13.254 | O | 1 |
| A3831 | 20.0 | 25.0 | 15.0 | 40.0 | 19.281 | X | 1 |
| A3832 | 19.1 | 25.9 | 15.0 | 40.0 | 19.010 | X | 1 |
| A3833 | 19.0 | 26.0 | 15.0 | 40.0 | 18.980 | O | 1 |
| A3834 | 15.0 | 30.0 | 15.0 | 40.0 | 17.777 | O | 1 |
| A3835 | 10.0 | 35.0 | 15.0 | 40.0 | 16.273 | O | 1 |
| A3836 | 9.0 | 36.0 | 15.0 | 40.0 | 15.972 | O | 1 |
| A3837 | 8.0 | 37.0 | 15.0 | 40.0 | 15.671 | O | 1 |
| A3838 | 7.0 | 38.0 | 15.0 | 40.0 | 15.370 | O | 1 |
| A3839 | 6.0 | 39.0 | 15.0 | 40.0 | 15.069 | O | 1 |
| A3840 | 5.0 | 40.0 | 15.0 | 40.0 | 14.751 | O | 1 |
| A3841 | 4.0 | 41.0 | 15.0 | 40.0 | 14.397 | O | 1 |
| A3842 | 3.0 | 42.0 | 15.0 | 40.0 | 14.042 | O | 1 |
| A3843 | 2.0 | 43.0 | 15.0 | 40.0 | 13.687 | O | 1 |
| A3844 | 1.0 | 44.0 | 15.0 | 40.0 | 13.333 | O | 1 |
| A3845 | 0.0 | 45.0 | 15.0 | 40.0 | 12.978 | O | 1 |
| A3846 | 20.0 | 20.0 | 20.0 | 40.0 | 19.031 | X | 1 |
| A3847 | 19.9 | 20.1 | 20.0 | 40.0 | 19.001 | X | 1 |
| A3848 | 19.8 | 20.2 | 20.0 | 40.0 | 18.971 | O | 1 |
| A3849 | 19.0 | 21.0 | 20.0 | 40.0 | 18.730 | O | 1 |
| A3850 | 15.0 | 25.0 | 20.0 | 40.0 | 17.527 | O | 1 |
| A3851 | 10.0 | 30.0 | 20.0 | 40.0 | 16.023 | O | 1 |
| A3852 | 9.0 | 31.0 | 20.0 | 40.0 | 15.722 | O | 1 |
| A3853 | 8.0 | 32.0 | 20.0 | 40.0 | 15.421 | O | 1 |
| A3854 | 7.0 | 33.0 | 20.0 | 40.0 | 15.120 | O | 1 |
| A3855 | 6.0 | 34.0 | 20.0 | 40.0 | 14.819 | O | 1 |
| A3856 | 5.0 | 35.0 | 20.0 | 40.0 | 14.475 | O | 1 |
| A3857 | 4.0 | 36.0 | 20.0 | 40.0 | 14.121 | O | 1 |
| A3858 | 3.0 | 37.0 | 20.0 | 40.0 | 13.766 | O | 1 |
| A3859 | 2.0 | 38.0 | 20.0 | 40.0 | 13.411 | O | 1 |
| A3860 | 1.0 | 39.0 | 20.0 | 40.0 | 13.057 | O | 1 |
| A3861 | 0.0 | 40.0 | 20.0 | 40.0 | 12.702 | O | 1 |
| A3862 | 21.0 | 14.0 | 25.0 | 40.0 | 19.082 | X | 1 |
| A3863 | 20.8 | 14.2 | 25.0 | 40.0 | 19.022 | X | 1 |
| A3864 | 20.7 | 14.3 | 25.0 | 40.0 | 18.992 | O | 1 |
| A3865 | 20.0 | 15.0 | 25.0 | 40.0 | 18.781 | O | 1 |
| A3866 | 15.0 | 20.0 | 25.0 | 40.0 | 17.277 | O | 1 |

[Table 291]

| A3867 | 10.0 | 25.0 | 25.0 | 40.0 | 15.773 | O | 1 |
|---|---|---|---|---|---|---|---|
| A3868 | 9.0 | 26.0 | 25.0 | 40.0 | 15.472 | O | 1 |
| A3869 | 8.0 | 27.0 | 25.0 | 40.0 | 15.171 | O | 1 |
| A3870 | 7.0 | 28.0 | 25.0 | 40.0 | 14.870 | O | 1 |
| A3871 | 6.0 | 29.0 | 25.0 | 40.0 | 14.554 | O | 1 |
| A3872 | 5.0 | 30.0 | 25.0 | 40.0 | 14.199 | O | 1 |
| A3873 | 4.0 | 31.0 | 25.0 | 40.0 | 13.845 | O | 1 |
| A3874 | 3.0 | 32.0 | 25.0 | 40.0 | 13.490 | O | 1 |
| A3875 | 2.0 | 33.0 | 25.0 | 40.0 | 13.135 | O | 1 |
| A3876 | 1.0 | 34.0 | 25.0 | 40.0 | 12.781 | O | 1 |
| A3877 | 0.0 | 35.0 | 25.0 | 40.0 | 12.426 | O | 1 |
| A3878 | 22.0 | 8.0 | 30.0 | 40.0 | 19.133 | X | 1 |
| A3879 | 21.6 | 8.4 | 30.0 | 40.0 | 19.012 | X | 1 |
| A3880 | 21.5 | 8.5 | 30.0 | 40.0 | 18.982 | O | 1 |
| A3881 | 21.0 | 9.0 | 30.0 | 40.0 | 18.832 | O | 1 |
| A3882 | 15.0 | 15.0 | 30.0 | 40.0 | 17.027 | O | 1 |
| A3883 | 10.0 | 20.0 | 30.0 | 40.0 | 15.523 | O | 1 |
| A3884 | 9.0 | 21.0 | 30.0 | 40.0 | 15.222 | O | 1 |
| A3885 | 8.0 | 22.0 | 30.0 | 40.0 | 14.921 | O | 1 |
| A3886 | 7.0 | 23.0 | 30.0 | 40.0 | 14.620 | O | 1 |
| A3887 | 6.0 | 24.0 | 30.0 | 40.0 | 14.278 | O | 1 |
| A3888 | 5.0 | 25.0 | 30.0 | 40.0 | 13.923 | O | 1 |
| A3889 | 4.0 | 26.0 | 30.0 | 40.0 | 13.569 | O | 1 |
| A3890 | 3.0 | 27.0 | 30.0 | 40.0 | 13.214 | O | 1 |
| A3891 | 2.0 | 28.0 | 30.0 | 40.0 | 12.859 | O | 1 |
| A3892 | 1.0 | 29.0 | 30.0 | 40.0 | 12.505 | O | 1 |
| A3893 | 0.0 | 30.0 | 30.0 | 40.0 | 12.150 | O | 1 |
| A3894 | 23.0 | 2.0 | 35.0 | 40.0 | 19.184 | X | 1 |
| A3895 | 22.4 | 2.6 | 35.0 | 40.0 | 19.003 | X | 1 |
| A3896 | 22.3 | 2.7 | 35.0 | 40.0 | 18.973 | O | 1 |
| A3897 | 22.0 | 3.0 | 35.0 | 40.0 | 18.883 | O | 1 |
| A3898 | 15.0 | 10.0 | 35.0 | 40.0 | 16.777 | O | 1 |
| A3899 | 10.0 | 15.0 | 35.0 | 40.0 | 15.273 | O | 1 |
| A3900 | 9.0 | 16.0 | 35.0 | 40.0 | 14.972 | O | 1 |
| A3901 | 8.0 | 17.0 | 35.0 | 40.0 | 14.671 | O | 1 |
| A3902 | 7.0 | 18.0 | 35.0 | 40.0 | 14.357 | O | 1 |
| A3903 | 6.0 | 19.0 | 35.0 | 40.0 | 14.002 | O | 1 |
| A3904 | 5.0 | 20.0 | 35.0 | 40.0 | 13.647 | O | 1 |
| A3905 | 4.0 | 21.0 | 35.0 | 40.0 | 13.293 | O | 1 |
| A3906 | 3.0 | 22.0 | 35.0 | 40.0 | 12.938 | O | 1 |
| A3907 | 2.0 | 23.0 | 35.0 | 40.0 | 12.583 | O | 1 |
| A3908 | 1.0 | 24.0 | 35.0 | 40.0 | 12.229 | O | 1 |
| A3909 | 0.0 | 25.0 | 35.0 | 40.0 | 11.874 | O | 1 |
| A3910 | 20.0 | 25.0 | 5.0 | 50.0 | 19.221 | X | 1 |
| A3911 | 19.3 | 25.7 | 5.0 | 50.0 | 19.011 | X | 1 |
| A3912 | 19.2 | 25.8 | 5.0 | 50.0 | 18.981 | O | 1 |
| A3913 | 19.0 | 26.0 | 5.0 | 50.0 | 18.921 | O | 1 |
| A3914 | 15.0 | 30.0 | 5.0 | 50.0 | 17.717 | O | 1 |
| A3915 | 10.0 | 35.0 | 5.0 | 50.0 | 16.213 | O | 1 |
| A3916 | 9.0 | 36.0 | 5.0 | 50.0 | 15.912 | O | 1 |

[Table 292]

| A3917 | 8.0 | 37.0 | 5.0 | 50.0 | 15.612 | O | 1 |
|---|---|---|---|---|---|---|---|
| A3918 | 7.0 | 48.0 | 5.0 | 40.0 | 15.870 | O | 1 |
| A3919 | 6.0 | 49.0 | 5.0 | 40.0 | 15.569 | O | 1 |
| A3920 | 5.0 | 50.0 | 5.0 | 40.0 | 15.268 | O | 1 |
| A3921 | 4.0 | 51.0 | 5.0 | 40.0 | 14.949 | O | 1 |
| A3922 | 3.0 | 52.0 | 5.0 | 40.0 | 14.594 | O | 1 |
| A3923 | 2.0 | 53.0 | 5.0 | 40.0 | 14.239 | O | 1 |
| A3924 | 1.0 | 54.0 | 5.0 | 40.0 | 13.885 | O | 1 |
| A3925 | 0.0 | 55.0 | 5.0 | 40.0 | 13.530 | O | 1 |
| A3926 | 19.0 | 31.0 | 10.0 | 40.0 | 19.230 | X | 1 |
| A3927 | 18.3 | 31.7 | 10.0 | 40.0 | 19.019 | X | 1 |
| A3928 | 18.2 | 31.8 | 10.0 | 40.0 | 18.989 | O | 1 |
| A3929 | 18.0 | 32.0 | 10.0 | 40.0 | 18.929 | O | 1 |
| A3930 | 15.0 | 35.0 | 10.0 | 40.0 | 18.027 | O | 1 |
| A3931 | 10.0 | 40.0 | 10.0 | 40.0 | 16.522 | O | 1 |
| A3932 | 9.0 | 41.0 | 10.0 | 40.0 | 16.222 | O | 1 |
| A3933 | 8.0 | 42.0 | 10.0 | 40.0 | 15.921 | O | 1 |
| A3934 | 7.0 | 43.0 | 10.0 | 40.0 | 15.620 | O | 1 |
| A3935 | 6.0 | 44.0 | 10.0 | 40.0 | 15.319 | O | 1 |
| A3936 | 5.0 | 45.0 | 10.0 | 40.0 | 15.018 | O | 1 |
| A3937 | 4.0 | 46.0 | 10.0 | 40.0 | 14.673 | O | 1 |
| A3938 | 3.0 | 47.0 | 10.0 | 40.0 | 14.318 | O | 1 |
| A3939 | 2.0 | 48.0 | 10.0 | 40.0 | 13.963 | O | 1 |
| A3940 | 1.0 | 49.0 | 10.0 | 40.0 | 13.609 | O | 1 |
| A3941 | 0.0 | 50.0 | 10.0 | 40.0 | 13.254 | O | 1 |
| A3942 | 20.0 | 25.0 | 15.0 | 40.0 | 19.281 | X | 1 |
| A3943 | 19.1 | 25.9 | 15.0 | 40.0 | 19.010 | X | 1 |
| A3944 | 19.0 | 26.0 | 15.0 | 40.0 | 18.980 | O | 1 |
| A3945 | 15.0 | 30.0 | 15.0 | 40.0 | 17.777 | O | 1 |
| A3946 | 10.0 | 35.0 | 15.0 | 40.0 | 16.273 | O | 1 |
| A3947 | 9.0 | 36.0 | 15.0 | 40.0 | 15.972 | O | 1 |
| A3948 | 8.0 | 37.0 | 15.0 | 40.0 | 15.671 | O | 1 |
| A3949 | 7.0 | 38.0 | 15.0 | 40.0 | 15.370 | O | 1 |
| A3950 | 6.0 | 39.0 | 15.0 | 40.0 | 15.069 | O | 1 |
| A3951 | 5.0 | 40.0 | 15.0 | 40.0 | 14.751 | O | 1 |
| A3952 | 4.0 | 41.0 | 15.0 | 40.0 | 14.397 | O | 1 |
| A3953 | 3.0 | 42.0 | 15.0 | 40.0 | 14.042 | O | 1 |
| A3954 | 2.0 | 43.0 | 15.0 | 40.0 | 13.687 | O | 1 |
| A3955 | 1.0 | 44.0 | 15.0 | 40.0 | 13.333 | O | 1 |
| A3956 | 0.0 | 45.0 | 15.0 | 40.0 | 12.978 | O | 1 |
| A3957 | 20.0 | 20.0 | 20.0 | 40.0 | 19.031 | X | 1 |
| A3958 | 19.9 | 20.1 | 20.0 | 40.0 | 19.001 | X | 1 |
| A3959 | 19.8 | 20.2 | 20.0 | 40.0 | 18.971 | O | 1 |
| A3960 | 19.0 | 21.0 | 20.0 | 40.0 | 18.730 | O | 1 |
| A3961 | 15.0 | 25.0 | 20.0 | 40.0 | 17.527 | O | 1 |
| A3962 | 10.0 | 30.0 | 20.0 | 40.0 | 16.023 | O | 1 |
| A3963 | 9.0 | 31.0 | 20.0 | 40.0 | 15.722 | O | 1 |
| A3964 | 8.0 | 32.0 | 20.0 | 40.0 | 15.421 | O | 1 |
| A3965 | 7.0 | 33.0 | 20.0 | 40.0 | 15.120 | O | 1 |
| A3966 | 6.0 | 34.0 | 20.0 | 40.0 | 14.819 | O | 1 |

[Table 293]

| A3967 | 5.0 | 35.0 | 20.0 | 40.0 | 14.475 | O | 1 |
|---|---|---|---|---|---|---|---|
| A3968 | 4.0 | 36.0 | 20.0 | 40.0 | 14.121 | O | 1 |
| A3969 | 3.0 | 37.0 | 20.0 | 40.0 | 13.766 | O | 1 |
| A3970 | 2.0 | 38.0 | 20.0 | 40.0 | 13.411 | O | 1 |
| A3971 | 1.0 | 39.0 | 20.0 | 40.0 | 13.057 | O | 1 |
| A3972 | 0.0 | 40.0 | 20.0 | 40.0 | 12.702 | O | 1 |
| A3973 | 21.0 | 14.0 | 25.0 | 40.0 | 19.082 | X | 1 |
| A3974 | 20.8 | 14.2 | 25.0 | 40.0 | 19.022 | X | 1 |
| A3975 | 20.7 | 14.3 | 25.0 | 40.0 | 18.992 | O | 1 |
| A3976 | 20.0 | 15.0 | 25.0 | 40.0 | 18.781 | O | 1 |
| A3977 | 15.0 | 20.0 | 25.0 | 40.0 | 17.277 | O | 1 |
| A3978 | 10.0 | 25.0 | 25.0 | 40.0 | 15.773 | O | 1 |
| A3979 | 9.0 | 26.0 | 25.0 | 40.0 | 15.472 | O | 1 |
| A3980 | 8.0 | 27.0 | 25.0 | 40.0 | 15.171 | O | 1 |
| A3981 | 7.0 | 28.0 | 25.0 | 40.0 | 14.870 | O | 1 |
| A3982 | 6.0 | 29.0 | 25.0 | 40.0 | 14.554 | O | 1 |
| A3983 | 5.0 | 30.0 | 25.0 | 40.0 | 14.199 | O | 1 |
| A3984 | 4.0 | 31.0 | 25.0 | 40.0 | 13.845 | O | 1 |
| A3985 | 3.0 | 32.0 | 25.0 | 40.0 | 13.490 | O | 1 |
| A3986 | 2.0 | 33.0 | 25.0 | 40.0 | 13.135 | O | 1 |
| A3987 | 1.0 | 34.0 | 25.0 | 40.0 | 12.781 | O | 1 |
| A3988 | 0.0 | 35.0 | 25.0 | 40.0 | 12.426 | O | 1 |
| A3989 | 22.0 | 8.0 | 30.0 | 40.0 | 19.133 | X | 1 |
| A3990 | 21.6 | 8.4 | 30.0 | 40.0 | 19.012 | X | 1 |
| A3991 | 21.5 | 8.5 | 30.0 | 40.0 | 18.982 | O | 1 |
| A3992 | 21.0 | 9.0 | 30.0 | 40.0 | 18.832 | O | 1 |
| A3993 | 15.0 | 15.0 | 30.0 | 40.0 | 17.027 | O | 1 |
| A3994 | 10.0 | 20.0 | 30.0 | 40.0 | 15.523 | O | 1 |
| A3995 | 9.0 | 21.0 | 30.0 | 40.0 | 15.222 | O | 1 |
| A3996 | 8.0 | 22.0 | 30.0 | 40.0 | 14.921 | O | 1 |
| A3997 | 7.0 | 23.0 | 30.0 | 40.0 | 14.620 | O | 1 |
| A3998 | 6.0 | 24.0 | 30.0 | 40.0 | 14.278 | O | 1 |
| A3999 | 5.0 | 25.0 | 30.0 | 40.0 | 13.923 | O | 1 |
| A4000 | 4.0 | 26.0 | 30.0 | 40.0 | 13.569 | O | 1 |
| A4001 | 3.0 | 27.0 | 30.0 | 40.0 | 13.214 | O | 1 |
| A4002 | 2.0 | 28.0 | 30.0 | 40.0 | 12.859 | O | 1 |
| A4003 | 1.0 | 29.0 | 30.0 | 40.0 | 12.505 | O | 1 |
| A4004 | 0.0 | 30.0 | 30.0 | 40.0 | 12.150 | O | 1 |
| A4005 | 23.0 | 2.0 | 35.0 | 40.0 | 19.184 | X | 1 |
| A4006 | 22.4 | 2.6 | 35.0 | 40.0 | 19.003 | X | 1 |
| A4007 | 22.3 | 2.7 | 35.0 | 40.0 | 18.973 | O | 1 |
| A4008 | 22.0 | 3.0 | 35.0 | 40.0 | 18.883 | O | 1 |
| A4009 | 15.0 | 10.0 | 35.0 | 40.0 | 16.777 | O | 1 |
| A4010 | 10.0 | 15.0 | 35.0 | 40.0 | 15.273 | O | 1 |
| A4011 | 9.0 | 16.0 | 35.0 | 40.0 | 14.972 | O | 1 |
| A4012 | 8.0 | 17.0 | 35.0 | 40.0 | 14.671 | O | 1 |
| A4013 | 7.0 | 18.0 | 35.0 | 40.0 | 14.357 | O | 1 |
| A4014 | 6.0 | 19.0 | 35.0 | 40.0 | 14.002 | O | 1 |
| A4015 | 5.0 | 20.0 | 35.0 | 40.0 | 13.647 | O | 1 |
| A4016 | 4.0 | 21.0 | 35.0 | 40.0 | 13.293 | O | 1 |

[Table 294]

| A4017 | 3.0 | 22.0 | 35.0 | 40.0 | 12.938 | O | 1 |
|---|---|---|---|---|---|---|---|
| A4018 | 2.0 | 23.0 | 35.0 | 40.0 | 12.583 | O | 1 |
| A4019 | 1.0 | 24.0 | 35.0 | 40.0 | 12.229 | O | 1 |
| A4020 | 0.0 | 25.0 | 35.0 | 40.0 | 11.874 | O | 1 |
| A4021 | 20.0 | 25.0 | 5.0 | 50.0 | 19.221 | X | 1 |
| A4022 | 19.3 | 25.7 | 5.0 | 50.0 | 19.011 | X | 1 |
| A4023 | 19.2 | 25.8 | 5.0 | 50.0 | 18.981 | O | 1 |
| A4024 | 19.0 | 26.0 | 5.0 | 50.0 | 18.921 | O | 1 |
| A4025 | 15.0 | 30.0 | 5.0 | 50.0 | 17.717 | O | 1 |
| A4026 | 10.0 | 35.0 | 5.0 | 50.0 | 16.213 | O | 1 |
| A4027 | 9.0 | 36.0 | 5.0 | 50.0 | 15.912 | O | 1 |
| A4028 | 8.0 | 37.0 | 5.0 | 50.0 | 15.612 | O | 1 |
| A4029 | 7.0 | 38.0 | 5.0 | 50.0 | 15.311 | O | 1 |
| A4030 | 6.0 | 39.0 | 5.0 | 50.0 | 15.010 | O | 1 |
| A4031 | 5.0 | 40.0 | 5.0 | 50.0 | 14.692 | O | 1 |
| A4032 | 4.0 | 41.0 | 5.0 | 50.0 | 14.337 | O | 1 |
| A4033 | 3.0 | 42.0 | 5.0 | 50.0 | 13.983 | O | 1 |
| A4034 | 2.0 | 43.0 | 5.0 | 50.0 | 13.628 | O | 1 |
| A4035 | 1.0 | 44.0 | 5.0 | 50.0 | 13.273 | O | 1 |
| A4036 | 0.0 | 45.0 | 5.0 | 50.0 | 12.918 | O | 1 |
| A4037 | 21.0 | 19.0 | 10.0 | 50.0 | 19.272 | X | 1 |
| A4038 | 20.1 | 19.9 | 10.0 | 50.0 | 19.002 | X | 1 |
| A4039 | 20.0 | 20.0 | 10.0 | 50.0 | 18.972 | O | 1 |
| A4040 | 15.0 | 25.0 | 10.0 | 50.0 | 17.467 | O | 1 |
| A4041 | 10.0 | 30.0 | 10.0 | 50.0 | 15.963 | O | 1 |
| A4042 | 9.0 | 31.0 | 10.0 | 50.0 | 15.662 | O | 1 |
| A4043 | 8.0 | 32.0 | 10.0 | 50.0 | 15.362 | O | 1 |
| A4044 | 7.0 | 33.0 | 10.0 | 50.0 | 15.061 | O | 1 |
| A4045 | 6.0 | 34.0 | 10.0 | 50.0 | 14.760 | O | 1 |
| A4046 | 5.0 | 35.0 | 10.0 | 50.0 | 14.416 | O | 1 |
| A4047 | 4.0 | 36.0 | 10.0 | 50.0 | 14.061 | O | 1 |
| A4048 | 3.0 | 37.0 | 10.0 | 50.0 | 13.707 | O | 1 |
| A4049 | 2.0 | 38.0 | 10.0 | 50.0 | 13.352 | O | 1 |
| A4050 | 1.0 | 39.0 | 10.0 | 50.0 | 12.997 | O | 1 |
| A4051 | 0.0 | 40.0 | 10.0 | 50.0 | 12.643 | O | 1 |
| A4052 | 21.0 | 14.0 | 15.0 | 50.0 | 19.022 | X | 1 |
| A4053 | 20.9 | 14.1 | 15.0 | 50.0 | 18.992 | O | 1 |
| A4054 | 20.0 | 15.0 | 15.0 | 50.0 | 18.722 | O | 1 |
| A4055 | 15.0 | 20.0 | 15.0 | 50.0 | 17.217 | O | 1 |
| A4056 | 10.0 | 25.0 | 15.0 | 50.0 | 15.713 | O | 1 |
| A4057 | 9.0 | 26.0 | 15.0 | 50.0 | 15.412 | O | 1 |
| A4058 | 8.0 | 27.0 | 15.0 | 50.0 | 15.112 | O | 1 |
| A4059 | 7.0 | 28.0 | 15.0 | 50.0 | 14.811 | O | 1 |
| A4060 | 6.0 | 29.0 | 15.0 | 50.0 | 14.495 | O | 1 |
| A4061 | 5.0 | 30.0 | 15.0 | 50.0 | 14.140 | O | 1 |
| A4062 | 4.0 | 31.0 | 15.0 | 50.0 | 13.785 | O | 1 |
| A4063 | 3.0 | 32.0 | 15.0 | 50.0 | 13.431 | O | 1 |
| A4064 | 2.0 | 33.0 | 15.0 | 50.0 | 13.076 | O | 1 |
| A4065 | 1.0 | 34.0 | 15.0 | 50.0 | 12.721 | O | 1 |
| A4066 | 0.0 | 35.0 | 15.0 | 50.0 | 12.367 | O | 1 |

[Table 295]

| A4067 | 22.0 | 8.0 | 20.0 | 50.0 | 19.073 | X | 1 |
|---|---|---|---|---|---|---|---|
| A4068 | 21.8 | 8.2 | 20.0 | 50.0 | 19.013 | X | 1 |
| A4069 | 21.7 | 8.3 | 20.0 | 50.0 | 18.983 | O | 1 |
| A4070 | 21.0 | 9.0 | 20.0 | 50.0 | 18.772 | O | 1 |
| A4071 | 20.0 | 10.0 | 20.0 | 50.0 | 18.472 | O | 1 |
| A4072 | 15.0 | 15.0 | 20.0 | 50.0 | 16.967 | O | 1 |
| A4073 | 10.0 | 20.0 | 20.0 | 50.0 | 15.463 | O | 1 |
| A4074 | 9.0 | 21.0 | 20.0 | 50.0 | 15.163 | O | 1 |
| A4075 | 8.0 | 22.0 | 20.0 | 50.0 | 14.862 | O | 1 |
| A4076 | 7.0 | 23.0 | 20.0 | 50.0 | 14.561 | O | 1 |
| A4077 | 6.0 | 24.0 | 20.0 | 50.0 | 14.219 | O | 1 |
| A4078 | 5.0 | 25.0 | 20.0 | 50.0 | 13.864 | O | 1 |
| A4079 | 4.0 | 26.0 | 20.0 | 50.0 | 13.509 | O | 1 |
| A4080 | 3.0 | 27.0 | 20.0 | 50.0 | 13.155 | O | 1 |
| A4081 | 2.0 | 28.0 | 20.0 | 50.0 | 12.800 | O | 1 |
| A4082 | 1.0 | 29.0 | 20.0 | 50.0 | 12.445 | O | 1 |
| A4083 | 0.0 | 30.0 | 20.0 | 50.0 | 12.091 | O | 1 |
| A4084 | 23.0 | 2.0 | 25.0 | 50.0 | 19.124 | X | 1 |
| A4085 | 22.6 | 2.4 | 25.0 | 50.0 | 19.004 | X | 1 |
| A4086 | 22.5 | 2.5 | 25.0 | 50.0 | 18.974 | O | 1 |
| A4087 | 22.0 | 3.0 | 25.0 | 50.0 | 18.823 | O | 1 |
| A4088 | 20.0 | 5.0 | 25.0 | 50.0 | 18.222 | O | 1 |
| A4089 | 15.0 | 10.0 | 25.0 | 50.0 | 16.718 | O | 1 |
| A4090 | 10.0 | 15.0 | 25.0 | 50.0 | 15.213 | O | 1 |
| A4091 | 9.0 | 16.0 | 25.0 | 50.0 | 14.913 | O | 1 |
| A4092 | 8.0 | 17.0 | 25.0 | 50.0 | 14.612 | O | 1 |
| A4093 | 7.0 | 18.0 | 25.0 | 50.0 | 14.297 | O | 1 |
| A4094 | 6.0 | 19.0 | 25.0 | 50.0 | 13.943 | O | 1 |
| A4095 | 5.0 | 20.0 | 25.0 | 50.0 | 13.588 | O | 1 |
| A4096 | 4.0 | 21.0 | 25.0 | 50.0 | 13.233 | O | 1 |
| A4097 | 3.0 | 22.0 | 25.0 | 50.0 | 12.879 | O | 1 |
| A4098 | 2.0 | 23.0 | 25.0 | 50.0 | 12.524 | O | 1 |
| A4099 | 1.0 | 24.0 | 25.0 | 50.0 | 12.169 | O | 1 |
| A4100 | 0.0 | 25.0 | 25.0 | 50.0 | 11.815 | O | 1 |
| A4101 | 22.0 | 13.0 | 5.0 | 60.0 | 19.264 | X | 1 |
| A4102 | 21.2 | 13.8 | 5.0 | 60.0 | 19.023 | X | 1 |
| A4103 | 21.1 | 13.9 | 5.0 | 60.0 | 18.993 | O | 1 |
| A4104 | 21.0 | 14.0 | 5.0 | 60.0 | 18.963 | O | 1 |
| A4105 | 20.0 | 15.0 | 5.0 | 60.0 | 18.662 | O | 1 |
| A4106 | 15.0 | 20.0 | 5.0 | 60.0 | 17.158 | O | 1 |
| A4107 | 10.0 | 25.0 | 5.0 | 60.0 | 15.654 | O | 1 |
| A4108 | 9.0 | 26.0 | 5.0 | 60.0 | 15.353 | O | 1 |
| A4109 | 8.0 | 27.0 | 5.0 | 60.0 | 15.052 | O | 1 |
| A4110 | 7.0 | 28.0 | 5.0 | 60.0 | 14.751 | O | 1 |
| A4111 | 6.0 | 29.0 | 5.0 | 60.0 | 14.435 | O | 1 |
| A4112 | 5.0 | 30.0 | 5.0 | 60.0 | 14.081 | O | 1 |
| A4113 | 4.0 | 31.0 | 5.0 | 60.0 | 13.726 | O | 1 |
| A4114 | 3.0 | 32.0 | 5.0 | 60.0 | 13.371 | O | 1 |
| A4115 | 2.0 | 33.0 | 5.0 | 60.0 | 13.017 | O | 1 |
| A4116 | 1.0 | 34.0 | 5.0 | 60.0 | 12.662 | O | 1 |

[Table 296]

| | | | | | | |
|---|---|---|---|---|---|---|
| A4117 | 0.0 | 35.0 | 5.0 | 60.0 | 12.307 | O | 1 |
| A4118 | 22.0 | 8.0 | 10.0 | 60.0 | 19.014 | X | 1 |
| A4119 | 21.9 | 8.1 | 10.0 | 60.0 | 18.984 | O | 1 |
| A4120 | 21.0 | 9.0 | 10.0 | 60.0 | 18.713 | O | 1 |
| A4121 | 20.0 | 10.0 | 10.0 | 60.0 | 18.412 | O | 1 |
| A4122 | 15.0 | 15.0 | 10.0 | 60.0 | 16.908 | O | 1 |
| A4123 | 10.0 | 20.0 | 10.0 | 60.0 | 15.404 | O | 1 |
| A4124 | 9.0 | 21.0 | 10.0 | 60.0 | 15.103 | O | 1 |
| A4125 | 8.0 | 22.0 | 10.0 | 60.0 | 14.802 | O | 1 |
| A4126 | 7.0 | 23.0 | 10.0 | 60.0 | 14.501 | O | 1 |
| A4127 | 6.0 | 24.0 | 10.0 | 60.0 | 14.159 | O | 1 |
| A4128 | 5.0 | 25.0 | 10.0 | 60.0 | 13.805 | O | 1 |
| A4129 | 4.0 | 26.0 | 10.0 | 60.0 | 13.450 | O | 1 |
| A4130 | 3.0 | 27.0 | 10.0 | 60.0 | 13.095 | O | 1 |
| A4131 | 2.0 | 28.0 | 10.0 | 60.0 | 12.741 | O | 1 |
| A4132 | 1.0 | 29.0 | 10.0 | 60.0 | 12.386 | O | 1 |
| A4133 | 0.0 | 30.0 | 10.0 | 60.0 | 12.031 | O | 1 |
| A4134 | 23.0 | 2.0 | 15.0 | 60.0 | 19.065 | X | 1 |
| A4135 | 22.8 | 2.2 | 15.0 | 60.0 | 19.005 | X | 1 |
| A4136 | 22.7 | 2.3 | 15.0 | 60.0 | 18.975 | O | 1 |
| A4137 | 22.0 | 3.0 | 15.0 | 60.0 | 18.764 | O | 1 |
| A4138 | 20.0 | 5.0 | 15.0 | 60.0 | 18.162 | O | 1 |
| A4139 | 15.0 | 10.0 | 15.0 | 60.0 | 16.658 | O | 1 |
| A4140 | 10.0 | 15.0 | 15.0 | 60.0 | 15.154 | O | 1 |
| A4141 | 9.0 | 16.0 | 15.0 | 60.0 | 14.853 | O | 1 |
| A4142 | 8.0 | 17.0 | 15.0 | 60.0 | 14.552 | O | 1 |
| A4143 | 7.0 | 18.0 | 15.0 | 60.0 | 14.238 | O | 1 |
| A4144 | 6.0 | 19.0 | 15.0 | 60.0 | 13.883 | O | 1 |
| A4145 | 5.0 | 20.0 | 15.0 | 60.0 | 13.529 | O | 1 |
| A4146 | 4.0 | 21.0 | 15.0 | 60.0 | 13.174 | O | 1 |
| A4147 | 3.0 | 22.0 | 15.0 | 60.0 | 12.819 | O | 1 |
| A4148 | 2.0 | 23.0 | 15.0 | 60.0 | 12.465 | O | 1 |
| A4149 | 1.0 | 24.0 | 15.0 | 60.0 | 12.110 | O | 1 |
| A4150 | 0.0 | 25.0 | 15.0 | 60.0 | 11.755 | O | 1 |
| A4151 | 23.0 | 2.0 | 5.0 | 70.0 | 19.005 | X | 1 |
| A4152 | 22.9 | 2.1 | 5.0 | 70.0 | 18.975 | O | 1 |
| A4153 | 22.0 | 3.0 | 5.0 | 70.0 | 18.705 | O | 1 |
| A4154 | 20.0 | 5.0 | 5.0 | 70.0 | 18.103 | O | 1 |
| A4155 | 15.0 | 10.0 | 5.0 | 70.0 | 16.599 | O | 1 |
| A4156 | 10.0 | 15.0 | 5.0 | 70.0 | 15.095 | O | 1 |
| A4157 | 9.0 | 16.0 | 5.0 | 70.0 | 14.794 | O | 1 |
| A4158 | 8.0 | 17.0 | 5.0 | 70.0 | 14.493 | O | 1 |
| A4159 | 7.0 | 18.0 | 5.0 | 70.0 | 14.179 | O | 1 |
| A4160 | 6.0 | 19.0 | 5.0 | 70.0 | 13.824 | O | 1 |
| A4161 | 5.0 | 20.0 | 5.0 | 70.0 | 13.469 | O | 1 |
| A4162 | 4.0 | 21.0 | 5.0 | 70.0 | 13.115 | O | 1 |
| A4163 | 3.0 | 22.0 | 5.0 | 70.0 | 12.760 | O | 1 |
| A4164 | 2.0 | 23.0 | 5.0 | 70.0 | 12.405 | O | 1 |
| A4165 | 1.0 | 24.0 | 5.0 | 70.0 | 12.051 | O | 1 |
| A4166 | 0.0 | 25.0 | 5.0 | 70.0 | 11.696 | O | 1 |

Tables 297 to 320 show the composition, combustion heat amount, and GWP of the working medium of a four-component system of propane, HFO-1132(E), HFO-1234yf, and HFC-32.

[Table 297]

| Case | propane | HFO-1132(E) | HFO-1234yf | HFC-32 | Heat of Combustion | Evaluation | GWP |
|------|---------|-------------|------------|--------|--------------------|------------|-----|
| A4167 | 11.0 | 82.0 | 5.0 | 2.0 | 19.176 | X | 15 |
| A4168 | 10.5 | 82.5 | 5.0 | 2.0 | 19.026 | X | 15 |
| A4169 | 10.4 | 82.6 | 5.0 | 2.0 | 18.996 | O | 15 |
| A4170 | 10.0 | 83.0 | 5.0 | 2.0 | 18.875 | O | 15 |
| A4171 | 9.0 | 84.0 | 5.0 | 2.0 | 18.575 | O | 15 |
| A4172 | 8.0 | 85.0 | 5.0 | 2.0 | 18.274 | O | 15 |
| A4173 | 7.0 | 86.0 | 5.0 | 2.0 | 17.973 | O | 15 |
| A4174 | 6.0 | 87.0 | 5.0 | 2.0 | 17.672 | O | 15 |
| A4175 | 5.0 | 88.0 | 5.0 | 2.0 | 17.371 | O | 15 |
| A4176 | 4.0 | 89.0 | 5.0 | 2.0 | 17.070 | O | 15 |
| A4177 | 3.0 | 90.0 | 5.0 | 2.0 | 16.770 | O | 15 |
| A4178 | 2.0 | 91.0 | 5.0 | 2.0 | 16.469 | O | 15 |
| A4179 | 1.0 | 92.0 | 5.0 | 2.0 | 16.168 | O | 15 |
| A4180 | 0.0 | 93.0 | 5.0 | 2.0 | 15.841 | O | 15 |
| A4181 | 12.0 | 76.0 | 10.0 | 2.0 | 19.227 | X | 15 |
| A4182 | 11.3 | 76.7 | 10.0 | 2.0 | 19.017 | X | 15 |
| A4183 | 11.2 | 76.8 | 10.0 | 2.0 | 18.986 | O | 15 |
| A4184 | 11.0 | 77.0 | 10.0 | 2.0 | 18.926 | O | 15 |
| A4185 | 10.0 | 78.0 | 10.0 | 2.0 | 18.625 | O | 15 |
| A4186 | 9.0 | 79.0 | 10.0 | 2.0 | 18.325 | O | 15 |
| A4187 | 8.0 | 80.0 | 10.0 | 2.0 | 18.024 | O | 15 |
| A4188 | 7.0 | 81.0 | 10.0 | 2.0 | 17.723 | O | 15 |
| A4189 | 6.0 | 82.0 | 10.0 | 2.0 | 17.422 | O | 15 |
| A4190 | 5.0 | 83.0 | 10.0 | 2.0 | 17.121 | O | 15 |
| A4191 | 4.0 | 84.0 | 10.0 | 2.0 | 16.820 | O | 15 |
| A4192 | 3.0 | 85.0 | 10.0 | 2.0 | 16.520 | O | 15 |
| A4193 | 2.0 | 86.0 | 10.0 | 2.0 | 16.219 | O | 15 |
| A4194 | 1.0 | 87.0 | 10.0 | 2.0 | 15.918 | O | 15 |
| A4195 | 0.0 | 88.0 | 10.0 | 2.0 | 15.565 | O | 15 |
| A4196 | 13.0 | 70.0 | 15.0 | 2.0 | 19.278 | X | 15 |
| A4197 | 12.1 | 70.9 | 15.0 | 2.0 | 19.007 | X | 15 |
| A4198 | 12.0 | 71.0 | 15.0 | 2.0 | 18.977 | O | 15 |
| A4199 | 10.0 | 73.0 | 15.0 | 2.0 | 18.375 | O | 15 |
| A4200 | 9.0 | 74.0 | 15.0 | 2.0 | 18.075 | O | 15 |
| A4201 | 8.0 | 75.0 | 15.0 | 2.0 | 17.774 | O | 15 |
| A4202 | 7.0 | 76.0 | 15.0 | 2.0 | 17.473 | O | 15 |
| A4203 | 6.0 | 77.0 | 15.0 | 2.0 | 17.172 | O | 15 |
| A4204 | 5.0 | 78.0 | 15.0 | 2.0 | 16.871 | O | 15 |
| A4205 | 4.0 | 79.0 | 15.0 | 2.0 | 16.571 | O | 15 |
| A4206 | 3.0 | 80.0 | 15.0 | 2.0 | 16.270 | O | 15 |
| A4207 | 2.0 | 81.0 | 15.0 | 2.0 | 15.969 | O | 15 |
| A4208 | 1.0 | 82.0 | 15.0 | 2.0 | 15.644 | O | 15 |
| A4209 | 0.0 | 83.0 | 15.0 | 2.0 | 15.289 | O | 15 |
| A4210 | 13.0 | 65.0 | 20.0 | 2.0 | 19.028 | X | 15 |
| A4211 | 12.9 | 65.1 | 20.0 | 2.0 | 18.998 | O | 15 |
| A4212 | 12.0 | 66.0 | 20.0 | 2.0 | 18.727 | O | 15 |
| A4213 | 10.0 | 68.0 | 20.0 | 2.0 | 18.126 | O | 15 |
| A4214 | 9.0 | 69.0 | 20.0 | 2.0 | 17.825 | O | 15 |
| A4215 | 8.0 | 70.0 | 20.0 | 2.0 | 17.524 | O | 15 |
| A4216 | 7.0 | 71.0 | 20.0 | 2.0 | 17.223 | O | 15 |

[Table 298]

| A4217 | 6.0 | 72.0 | 20.0 | 2.0 | 16.922 | O | 15 |
|---|---|---|---|---|---|---|---|
| A4218 | 5.0 | 73.0 | 20.0 | 2.0 | 16.621 | O | 15 |
| A4219 | 4.0 | 74.0 | 20.0 | 2.0 | 16.321 | O | 15 |
| A4220 | 3.0 | 75.0 | 20.0 | 2.0 | 16.020 | O | 15 |
| A4221 | 2.0 | 76.0 | 20.0 | 2.0 | 15.719 | O | 15 |
| A4222 | 1.0 | 77.0 | 20.0 | 2.0 | 15.368 | O | 15 |
| A4223 | 0.0 | 78.0 | 20.0 | 2.0 | 15.013 | O | 15 |
| A4224 | 14.0 | 59.0 | 25.0 | 2.0 | 19.079 | X | 15 |
| A4225 | 13.8 | 59.2 | 25.0 | 2.0 | 19.019 | X | 15 |
| A4226 | 13.7 | 59.3 | 25.0 | 2.0 | 18.989 | O | 15 |
| A4227 | 13.0 | 60.0 | 25.0 | 2.0 | 18.778 | O | 15 |
| A4228 | 10.0 | 63.0 | 25.0 | 2.0 | 17.876 | O | 15 |
| A4229 | 9.0 | 64.0 | 25.0 | 2.0 | 17.575 | O | 15 |
| A4230 | 8.0 | 65.0 | 25.0 | 2.0 | 17.274 | O | 15 |
| A4231 | 7.0 | 66.0 | 25.0 | 2.0 | 16.973 | O | 15 |
| A4232 | 6.0 | 67.0 | 25.0 | 2.0 | 16.672 | O | 15 |
| A4233 | 5.0 | 68.0 | 25.0 | 2.0 | 16.371 | O | 15 |
| A4234 | 4.0 | 69.0 | 25.0 | 2.0 | 16.071 | O | 15 |
| A4235 | 3.0 | 70.0 | 25.0 | 2.0 | 15.770 | O | 15 |
| A4236 | 2.0 | 71.0 | 25.0 | 2.0 | 15.447 | O | 15 |
| A4237 | 1.0 | 72.0 | 25.0 | 2.0 | 15.092 | O | 15 |
| A4238 | 0.0 | 73.0 | 25.0 | 2.0 | 14.737 | O | 15 |
| A4239 | 15.0 | 53.0 | 30.0 | 2.0 | 19.130 | X | 15 |
| A4240 | 14.6 | 53.4 | 30.0 | 2.0 | 19.009 | X | 15 |
| A4241 | 14.5 | 53.5 | 30.0 | 2.0 | 18.979 | O | 15 |
| A4242 | 13.0 | 55.0 | 30.0 | 2.0 | 18.528 | O | 15 |
| A4243 | 10.0 | 58.0 | 30.0 | 2.0 | 17.626 | O | 15 |
| A4244 | 9.0 | 59.0 | 30.0 | 2.0 | 17.325 | O | 15 |
| A4245 | 8.0 | 60.0 | 30.0 | 2.0 | 17.024 | O | 15 |
| A4246 | 7.0 | 61.0 | 30.0 | 2.0 | 16.723 | O | 15 |
| A4247 | 6.0 | 62.0 | 30.0 | 2.0 | 16.422 | O | 15 |
| A4248 | 5.0 | 63.0 | 30.0 | 2.0 | 16.122 | O | 15 |
| A4249 | 4.0 | 64.0 | 30.0 | 2.0 | 15.821 | O | 15 |
| A4250 | 3.0 | 65.0 | 30.0 | 2.0 | 15.520 | O | 15 |
| A4251 | 2.0 | 66.0 | 30.0 | 2.0 | 15.171 | O | 15 |
| A4252 | 1.0 | 67.0 | 30.0 | 2.0 | 14.816 | O | 15 |
| A4253 | 0.0 | 68.0 | 30.0 | 2.0 | 14.461 | O | 15 |
| A4254 | 16.0 | 47.0 | 35.0 | 2.0 | 19.181 | X | 15 |
| A4255 | 15.4 | 47.6 | 35.0 | 2.0 | 19.000 | X | 15 |
| A4256 | 15.3 | 47.7 | 35.0 | 2.0 | 18.970 | O | 15 |
| A4257 | 15.0 | 48.0 | 35.0 | 2.0 | 18.880 | O | 15 |
| A4258 | 10.0 | 53.0 | 35.0 | 2.0 | 17.376 | O | 15 |
| A4259 | 9.0 | 54.0 | 35.0 | 2.0 | 17.075 | O | 15 |
| A4260 | 8.0 | 55.0 | 35.0 | 2.0 | 16.774 | O | 15 |
| A4261 | 7.0 | 56.0 | 35.0 | 2.0 | 16.473 | O | 15 |
| A4262 | 6.0 | 57.0 | 35.0 | 2.0 | 16.172 | O | 15 |
| A4263 | 5.0 | 58.0 | 35.0 | 2.0 | 15.872 | O | 15 |
| A4264 | 4.0 | 59.0 | 35.0 | 2.0 | 15.571 | O | 15 |
| A4265 | 3.0 | 60.0 | 35.0 | 2.0 | 15.249 | O | 15 |
| A4266 | 2.0 | 61.0 | 35.0 | 2.0 | 14.895 | O | 15 |

[Table 299]

| A4267 | 1.0 | 62.0 | 35.0 | 2.0 | 14.540 | O | 15 |
|---|---|---|---|---|---|---|---|
| A4268 | 0.0 | 63.0 | 35.0 | 2.0 | 14.185 | O | 15 |
| A4269 | 17.0 | 41.0 | 40.0 | 2.0 | 19.232 | X | 15 |
| A4270 | 16.3 | 41.7 | 40.0 | 2.0 | 19.021 | X | 15 |
| A4271 | 16.2 | 41.8 | 40.0 | 2.0 | 18.991 | O | 15 |
| A4272 | 16.0 | 42.0 | 40.0 | 2.0 | 18.931 | O | 15 |
| A4273 | 15.0 | 43.0 | 40.0 | 2.0 | 18.630 | O | 15 |
| A4274 | 10.0 | 48.0 | 40.0 | 2.0 | 17.126 | O | 15 |
| A4275 | 9.0 | 49.0 | 40.0 | 2.0 | 16.825 | O | 15 |
| A4276 | 8.0 | 50.0 | 40.0 | 2.0 | 16.524 | O | 15 |
| A4277 | 7.0 | 51.0 | 40.0 | 2.0 | 16.223 | O | 15 |
| A4278 | 6.0 | 52.0 | 40.0 | 2.0 | 15.922 | O | 15 |
| A4279 | 5.0 | 53.0 | 40.0 | 2.0 | 15.622 | O | 15 |
| A4280 | 4.0 | 54.0 | 40.0 | 2.0 | 15.321 | O | 15 |
| A4281 | 3.0 | 55.0 | 40.0 | 2.0 | 14.973 | O | 15 |
| A4282 | 2.0 | 56.0 | 40.0 | 2.0 | 14.619 | O | 15 |
| A4283 | 1.0 | 57.0 | 40.0 | 2.0 | 14.264 | O | 15 |
| A4284 | 0.0 | 58.0 | 40.0 | 2.0 | 13.909 | O | 15 |
| A4285 | 18.0 | 35.0 | 45.0 | 2.0 | 19.282 | X | 15 |
| A4286 | 17.1 | 35.9 | 45.0 | 2.0 | 19.012 | X | 15 |
| A4287 | 17.0 | 36.0 | 45.0 | 2.0 | 18.982 | O | 15 |
| A4288 | 15.0 | 38.0 | 45.0 | 2.0 | 18.380 | O | 15 |
| A4289 | 10.0 | 43.0 | 45.0 | 2.0 | 16.876 | O | 15 |
| A4290 | 9.0 | 44.0 | 45.0 | 2.0 | 16.575 | O | 15 |
| A4291 | 8.0 | 45.0 | 45.0 | 2.0 | 16.274 | O | 15 |
| A4292 | 7.0 | 46.0 | 45.0 | 2.0 | 15.973 | O | 15 |
| A4293 | 6.0 | 47.0 | 45.0 | 2.0 | 15.673 | O | 15 |
| A4294 | 5.0 | 48.0 | 45.0 | 2.0 | 15.372 | O | 15 |
| A4295 | 4.0 | 49.0 | 45.0 | 2.0 | 15.052 | O | 15 |
| A4296 | 3.0 | 50.0 | 45.0 | 2.0 | 14.697 | O | 15 |
| A4297 | 2.0 | 51.0 | 45.0 | 2.0 | 14.343 | O | 15 |
| A4298 | 1.0 | 52.0 | 45.0 | 2.0 | 13.988 | O | 15 |
| A4299 | 0.0 | 53.0 | 45.0 | 2.0 | 13.633 | O | 15 |
| A4300 | 18.0 | 30.0 | 50.0 | 2.0 | 19.033 | X | 15 |
| A4301 | 17.9 | 30.1 | 50.0 | 2.0 | 19.002 | X | 15 |
| A4302 | 17.8 | 30.2 | 50.0 | 2.0 | 18.972 | O | 15 |
| A4303 | 17.0 | 31.0 | 50.0 | 2.0 | 18.732 | O | 15 |
| A4304 | 15.0 | 33.0 | 50.0 | 2.0 | 18.130 | O | 15 |
| A4305 | 10.0 | 38.0 | 50.0 | 2.0 | 16.626 | O | 15 |
| A4306 | 9.0 | 39.0 | 50.0 | 2.0 | 16.325 | O | 15 |
| A4307 | 8.0 | 40.0 | 50.0 | 2.0 | 16.024 | O | 15 |
| A4308 | 7.0 | 41.0 | 50.0 | 2.0 | 15.723 | O | 15 |
| A4309 | 6.0 | 42.0 | 50.0 | 2.0 | 15.423 | O | 15 |
| A4310 | 5.0 | 43.0 | 50.0 | 2.0 | 15.122 | O | 15 |
| A4311 | 4.0 | 44.0 | 50.0 | 2.0 | 14.776 | O | 15 |
| A4312 | 3.0 | 45.0 | 50.0 | 2.0 | 14.421 | O | 15 |
| A4313 | 2.0 | 46.0 | 50.0 | 2.0 | 14.067 | O | 15 |
| A4314 | 1.0 | 47.0 | 50.0 | 2.0 | 13.712 | O | 15 |
| A4315 | 0.0 | 48.0 | 50.0 | 2.0 | 13.357 | O | 15 |
| A4316 | 19.0 | 24.0 | 55.0 | 2.0 | 19.083 | X | 15 |

[Table 300]

| A4317 | 18.9 | 24.1 | 55.0 | 2.0 | 19.053 | X | 15 |
|---|---|---|---|---|---|---|---|
| A4318 | 18.7 | 24.3 | 55.0 | 2.0 | 18.993 | O | 15 |
| A4319 | 18.0 | 25.0 | 55.0 | 2.0 | 18.783 | O | 15 |
| A4320 | 15.0 | 28.0 | 55.0 | 2.0 | 17.880 | O | 15 |
| A4321 | 10.0 | 33.0 | 55.0 | 2.0 | 16.376 | O | 15 |
| A4322 | 9.0 | 34.0 | 55.0 | 2.0 | 16.075 | O | 15 |
| A4323 | 8.0 | 35.0 | 55.0 | 2.0 | 15.774 | O | 15 |
| A4324 | 7.0 | 36.0 | 55.0 | 2.0 | 15.473 | O | 15 |
| A4325 | 6.0 | 37.0 | 55.0 | 2.0 | 15.173 | O | 15 |
| A4326 | 5.0 | 38.0 | 55.0 | 2.0 | 14.855 | O | 15 |
| A4327 | 4.0 | 39.0 | 55.0 | 2.0 | 14.500 | O | 15 |
| A4328 | 3.0 | 40.0 | 55.0 | 2.0 | 14.145 | O | 15 |
| A4329 | 2.0 | 41.0 | 55.0 | 2.0 | 13.791 | O | 15 |
| A4330 | 1.0 | 42.0 | 55.0 | 2.0 | 13.436 | O | 15 |
| A4331 | 0.0 | 43.0 | 55.0 | 2.0 | 13.081 | O | 15 |
| A4332 | 20.0 | 18.0 | 60.0 | 2.0 | 19.134 | X | 15 |
| A4333 | 19.6 | 18.4 | 60.0 | 2.0 | 19.014 | X | 15 |
| A4334 | 19.5 | 18.5 | 60.0 | 2.0 | 18.984 | O | 15 |
| A4335 | 19.0 | 19.0 | 60.0 | 2.0 | 18.833 | O | 15 |
| A4336 | 15.0 | 23.0 | 60.0 | 2.0 | 17.630 | O | 15 |
| A4337 | 10.0 | 28.0 | 60.0 | 2.0 | 16.126 | O | 15 |
| A4338 | 9.0 | 29.0 | 60.0 | 2.0 | 15.825 | O | 15 |
| A4339 | 8.0 | 30.0 | 60.0 | 2.0 | 15.524 | O | 15 |
| A4340 | 7.0 | 31.0 | 60.0 | 2.0 | 15.223 | O | 15 |
| A4341 | 6.0 | 32.0 | 60.0 | 2.0 | 14.923 | O | 15 |
| A4342 | 5.0 | 33.0 | 60.0 | 2.0 | 14.579 | O | 15 |
| A4343 | 4.0 | 34.0 | 60.0 | 2.0 | 14.224 | O | 15 |
| A4344 | 3.0 | 35.0 | 60.0 | 2.0 | 13.869 | O | 15 |
| A4345 | 2.0 | 36.0 | 60.0 | 2.0 | 13.515 | O | 15 |
| A4346 | 1.0 | 37.0 | 60.0 | 2.0 | 13.160 | O | 15 |
| A4347 | 0.0 | 38.0 | 60.0 | 2.0 | 12.805 | O | 15 |
| A4348 | 21.0 | 12.0 | 65.0 | 2.0 | 19.185 | X | 15 |
| A4349 | 20.4 | 12.6 | 65.0 | 2.0 | 19.005 | X | 15 |
| A4350 | 20.3 | 12.7 | 65.0 | 2.0 | 18.975 | O | 15 |
| A4351 | 20.0 | 13.0 | 65.0 | 2.0 | 18.884 | O | 15 |
| A4352 | 15.0 | 18.0 | 65.0 | 2.0 | 17.380 | O | 15 |
| A4353 | 10.0 | 23.0 | 65.0 | 2.0 | 15.876 | O | 15 |
| A4354 | 9.0 | 24.0 | 65.0 | 2.0 | 15.575 | O | 15 |
| A4355 | 8.0 | 25.0 | 65.0 | 2.0 | 15.274 | O | 15 |
| A4356 | 7.0 | 26.0 | 65.0 | 2.0 | 14.974 | O | 15 |
| A4357 | 6.0 | 27.0 | 65.0 | 2.0 | 14.657 | O | 15 |
| A4358 | 5.0 | 28.0 | 65.0 | 2.0 | 14.303 | O | 15 |
| A4359 | 4.0 | 29.0 | 65.0 | 2.0 | 13.948 | O | 15 |
| A4360 | 3.0 | 30.0 | 65.0 | 2.0 | 13.593 | O | 15 |
| A4361 | 2.0 | 31.0 | 65.0 | 2.0 | 13.239 | O | 15 |
| A4362 | 1.0 | 32.0 | 65.0 | 2.0 | 12.884 | O | 15 |
| A4363 | 0.0 | 33.0 | 65.0 | 2.0 | 12.529 | O | 15 |
| A4364 | 22.0 | 6.0 | 70.0 | 2.0 | 19.236 | X | 15 |
| A4365 | 21.3 | 6.7 | 70.0 | 2.0 | 19.025 | X | 15 |
| A4366 | 21.2 | 6.8 | 70.0 | 2.0 | 18.995 | O | 15 |

[Table 301]

| A4367 | 21.0 | 7.0 | 70.0 | 2.0 | 18.935 | O | 15 |
|---|---|---|---|---|---|---|---|
| A4368 | 20.0 | 8.0 | 70.0 | 2.0 | 18.634 | O | 15 |
| A4369 | 15.0 | 13.0 | 70.0 | 2.0 | 17.130 | O | 15 |
| A4370 | 10.0 | 18.0 | 70.0 | 2.0 | 15.626 | O | 15 |
| A4371 | 9.0 | 19.0 | 70.0 | 2.0 | 15.325 | O | 15 |
| A4372 | 8.0 | 20.0 | 70.0 | 2.0 | 15.024 | O | 15 |
| A4373 | 7.0 | 21.0 | 70.0 | 2.0 | 14.724 | O | 15 |
| A4374 | 6.0 | 22.0 | 70.0 | 2.0 | 14.381 | O | 15 |
| A4375 | 5.0 | 23.0 | 70.0 | 2.0 | 14.027 | O | 15 |
| A4376 | 4.0 | 24.0 | 70.0 | 2.0 | 13.672 | O | 15 |
| A4377 | 3.0 | 25.0 | 70.0 | 2.0 | 13.317 | O | 15 |
| A4378 | 2.0 | 26.0 | 70.0 | 2.0 | 12.963 | O | 15 |
| A4379 | 1.0 | 27.0 | 70.0 | 2.0 | 12.608 | O | 15 |
| A4380 | 0.0 | 28.0 | 70.0 | 2.0 | 12.253 | O | 15 |
| A4381 | 12.0 | 78.0 | 5.0 | 5.0 | 19.276 | X | 35 |
| A4382 | 11.1 | 78.9 | 5.0 | 5.0 | 19.005 | X | 35 |
| A4383 | 10.0 | 80.0 | 5.0 | 5.0 | 18.674 | O | 35 |
| A4384 | 11.0 | 79.0 | 5.0 | 5.0 | 18.975 | O | 35 |
| A4385 | 9.0 | 81.0 | 5.0 | 5.0 | 18.373 | O | 35 |
| A4386 | 8.0 | 82.0 | 5.0 | 5.0 | 18.073 | O | 35 |
| A4387 | 7.0 | 83.0 | 5.0 | 5.0 | 17.772 | O | 35 |
| A4388 | 6.0 | 84.0 | 5.0 | 5.0 | 17.471 | O | 35 |
| A4389 | 5.0 | 85.0 | 5.0 | 5.0 | 17.170 | O | 35 |
| A4390 | 4.0 | 86.0 | 5.0 | 5.0 | 16.869 | O | 35 |
| A4391 | 3.0 | 87.0 | 5.0 | 5.0 | 16.568 | O | 35 |
| A4392 | 2.0 | 88.0 | 5.0 | 5.0 | 16.268 | O | 35 |
| A4393 | 1.0 | 89.0 | 5.0 | 5.0 | 15.967 | O | 35 |
| A4394 | 0.0 | 90.0 | 5.0 | 5.0 | 15.640 | O | 35 |
| A4395 | 12.0 | 73.0 | 10.0 | 5.0 | 19.026 | X | 35 |
| A4396 | 11.9 | 73.1 | 10.0 | 5.0 | 18.996 | O | 35 |
| A4397 | 11.0 | 74.0 | 10.0 | 5.0 | 18.725 | O | 35 |
| A4398 | 10.0 | 75.0 | 10.0 | 5.0 | 18.424 | O | 35 |
| A4399 | 9.0 | 76.0 | 10.0 | 5.0 | 18.124 | O | 35 |
| A4400 | 8.0 | 77.0 | 10.0 | 5.0 | 17.823 | O | 35 |
| A4401 | 7.0 | 78.0 | 10.0 | 5.0 | 17.522 | O | 35 |
| A4402 | 6.0 | 79.0 | 10.0 | 5.0 | 17.221 | O | 35 |
| A4403 | 5.0 | 80.0 | 10.0 | 5.0 | 16.920 | O | 35 |
| A4404 | 4.0 | 81.0 | 10.0 | 5.0 | 16.619 | O | 35 |
| A4405 | 3.0 | 82.0 | 10.0 | 5.0 | 16.319 | O | 35 |
| A4406 | 2.0 | 83.0 | 10.0 | 5.0 | 16.018 | O | 35 |
| A4407 | 1.0 | 84.0 | 10.0 | 5.0 | 15.717 | O | 35 |
| A4408 | 0.0 | 85.0 | 10.0 | 5.0 | 15.364 | O | 35 |
| A4409 | 13.0 | 67.0 | 15.0 | 5.0 | 19.077 | X | 35 |
| A4410 | 12.8 | 67.2 | 15.0 | 5.0 | 19.017 | X | 35 |
| A4411 | 12.7 | 67.3 | 15.0 | 5.0 | 18.987 | O | 35 |
| A4412 | 12.0 | 68.0 | 15.0 | 5.0 | 18.776 | O | 35 |
| A4413 | 10.0 | 70.0 | 15.0 | 5.0 | 18.174 | O | 35 |
| A4414 | 9.0 | 71.0 | 15.0 | 5.0 | 17.874 | O | 35 |
| A4415 | 8.0 | 72.0 | 15.0 | 5.0 | 17.573 | O | 35 |
| A4416 | 7.0 | 73.0 | 15.0 | 5.0 | 17.272 | O | 35 |

[Table 302]

| A4417 | 6.0 | 74.0 | 15.0 | 5.0 | 16.971 | O | 35 |
|---|---|---|---|---|---|---|---|
| A4418 | 5.0 | 75.0 | 15.0 | 5.0 | 16.670 | O | 35 |
| A4419 | 4.0 | 76.0 | 15.0 | 5.0 | 16.369 | O | 35 |
| A4420 | 3.0 | 77.0 | 15.0 | 5.0 | 16.069 | O | 35 |
| A4421 | 2.0 | 78.0 | 15.0 | 5.0 | 15.768 | O | 35 |
| A4422 | 1.0 | 79.0 | 15.0 | 5.0 | 15.443 | O | 35 |
| A4423 | 0.0 | 80.0 | 15.0 | 5.0 | 15.088 | O | 35 |
| A4424 | 14.0 | 61.0 | 20.0 | 5.0 | 19.128 | X | 35 |
| A4425 | 13.6 | 61.4 | 20.0 | 5.0 | 19.007 | X | 35 |
| A4426 | 13.5 | 61.5 | 20.0 | 5.0 | 18.977 | O | 35 |
| A4427 | 13.0 | 62.0 | 20.0 | 5.0 | 18.827 | O | 35 |
| A4428 | 10.0 | 65.0 | 20.0 | 5.0 | 17.924 | O | 35 |
| A4429 | 9.0 | 66.0 | 20.0 | 5.0 | 17.624 | O | 35 |
| A4430 | 8.0 | 67.0 | 20.0 | 5.0 | 17.323 | O | 35 |
| A4431 | 7.0 | 68.0 | 20.0 | 5.0 | 17.022 | O | 35 |
| A4432 | 6.0 | 69.0 | 20.0 | 5.0 | 16.721 | O | 35 |
| A4433 | 5.0 | 70.0 | 20.0 | 5.0 | 16.420 | O | 35 |
| A4434 | 4.0 | 71.0 | 20.0 | 5.0 | 16.119 | O | 35 |
| A4435 | 3.0 | 72.0 | 20.0 | 5.0 | 15.819 | O | 35 |
| A4436 | 2.0 | 73.0 | 20.0 | 5.0 | 15.518 | O | 35 |
| A4437 | 1.0 | 74.0 | 20.0 | 5.0 | 15.167 | O | 35 |
| A4438 | 0.0 | 75.0 | 20.0 | 5.0 | 14.812 | O | 35 |
| A4439 | 15.0 | 55.0 | 25.0 | 5.0 | 19.179 | X | 35 |
| A4440 | 14.5 | 55.5 | 25.0 | 5.0 | 19.028 | X | 35 |
| A4441 | 14.4 | 55.6 | 25.0 | 5.0 | 18.998 | O | 35 |
| A4442 | 14.0 | 56.0 | 25.0 | 5.0 | 18.878 | O | 35 |
| A4443 | 10.0 | 60.0 | 25.0 | 5.0 | 17.675 | O | 35 |
| A4444 | 9.0 | 61.0 | 25.0 | 5.0 | 17.374 | O | 35 |
| A4445 | 8.0 | 62.0 | 25.0 | 5.0 | 17.073 | O | 35 |
| A4446 | 7.0 | 63.0 | 25.0 | 5.0 | 16.772 | O | 35 |
| A4447 | 6.0 | 64.0 | 25.0 | 5.0 | 16.471 | O | 35 |
| A4448 | 5.0 | 65.0 | 25.0 | 5.0 | 16.170 | O | 35 |
| A4449 | 4.0 | 66.0 | 25.0 | 5.0 | 15.870 | O | 35 |
| A4450 | 3.0 | 67.0 | 25.0 | 5.0 | 15.569 | O | 35 |
| A4451 | 2.0 | 68.0 | 25.0 | 5.0 | 15.245 | O | 35 |
| A4452 | 1.0 | 69.0 | 25.0 | 5.0 | 14.891 | O | 35 |
| A4453 | 0.0 | 70.0 | 25.0 | 5.0 | 14.536 | O | 35 |
| A4454 | 16.0 | 49.0 | 30.0 | 5.0 | 19.230 | X | 35 |
| A4455 | 15.3 | 49.7 | 30.0 | 5.0 | 19.019 | X | 35 |
| A4456 | 15.2 | 49.8 | 30.0 | 5.0 | 18.989 | O | 35 |
| A4457 | 15.0 | 50.0 | 30.0 | 5.0 | 18.929 | O | 35 |
| A4458 | 10.0 | 55.0 | 30.0 | 5.0 | 17.425 | O | 35 |
| A4459 | 9.0 | 56.0 | 30.0 | 5.0 | 17.124 | O | 35 |
| A4460 | 8.0 | 57.0 | 30.0 | 5.0 | 16.823 | O | 35 |
| A4461 | 7.0 | 58.0 | 30.0 | 5.0 | 16.522 | O | 35 |
| A4462 | 6.0 | 59.0 | 30.0 | 5.0 | 16.221 | O | 35 |
| A4463 | 5.0 | 60.0 | 30.0 | 5.0 | 15.920 | O | 35 |
| A4464 | 4.0 | 61.0 | 30.0 | 5.0 | 15.620 | O | 35 |
| A4465 | 3.0 | 62.0 | 30.0 | 5.0 | 15.319 | O | 35 |
| A4466 | 2.0 | 63.0 | 30.0 | 5.0 | 14.969 | O | 35 |

[Table 303]

EP 4 442 787 A1

| A4467 | 1.0 | 64.0 | 30.0 | 5.0 | 14.615 | O | 35 |
|---|---|---|---|---|---|---|---|
| A4468 | 0.0 | 65.0 | 30.0 | 5.0 | 14.260 | O | 35 |
| A4469 | 17.0 | 43.0 | 35.0 | 5.0 | 19.280 | X | 35 |
| A4470 | 16.1 | 43.9 | 35.0 | 5.0 | 19.010 | X | 35 |
| A4471 | 16.0 | 44.0 | 35.0 | 5.0 | 18.980 | O | 35 |
| A4472 | 15.0 | 45.0 | 35.0 | 5.0 | 18.679 | O | 35 |
| A4473 | 10.0 | 50.0 | 35.0 | 5.0 | 17.175 | O | 35 |
| A4474 | 9.0 | 51.0 | 35.0 | 5.0 | 16.874 | O | 35 |
| A4475 | 8.0 | 52.0 | 35.0 | 5.0 | 16.573 | O | 35 |
| A4476 | 7.0 | 53.0 | 35.0 | 5.0 | 16.272 | O | 35 |
| A4477 | 6.0 | 54.0 | 35.0 | 5.0 | 15.971 | O | 35 |
| A4478 | 5.0 | 55.0 | 35.0 | 5.0 | 15.670 | O | 35 |
| A4479 | 4.0 | 56.0 | 35.0 | 5.0 | 15.370 | O | 35 |
| A4480 | 3.0 | 57.0 | 35.0 | 5.0 | 15.048 | O | 35 |
| A4481 | 2.0 | 58.0 | 35.0 | 5.0 | 14.693 | O | 35 |
| A4482 | 1.0 | 59.0 | 35.0 | 5.0 | 14.339 | O | 35 |
| A4483 | 0.0 | 60.0 | 35.0 | 5.0 | 13.984 | O | 35 |
| A4484 | 17.0 | 38.0 | 40.0 | 5.0 | 19.030 | X | 35 |
| A4485 | 16.9 | 38.1 | 40.0 | 5.0 | 19.000 | X | 35 |
| A4486 | 16.8 | 38.2 | 40.0 | 5.0 | 18.970 | O | 35 |
| A4487 | 16.0 | 39.0 | 40.0 | 5.0 | 18.730 | O | 35 |
| A4488 | 15.0 | 40.0 | 40.0 | 5.0 | 18.429 | O | 35 |
| A4489 | 10.0 | 45.0 | 40.0 | 5.0 | 16.925 | O | 35 |
| A4490 | 9.0 | 46.0 | 40.0 | 5.0 | 16.624 | O | 35 |
| A4491 | 8.0 | 47.0 | 40.0 | 5.0 | 16.323 | O | 35 |
| A4492 | 7.0 | 48.0 | 40.0 | 5.0 | 16.022 | O | 35 |
| A4493 | 6.0 | 49.0 | 40.0 | 5.0 | 15.721 | O | 35 |
| A4494 | 5.0 | 50.0 | 40.0 | 5.0 | 15.421 | O | 35 |
| A4495 | 4.0 | 51.0 | 40.0 | 5.0 | 15.120 | O | 35 |
| A4496 | 3.0 | 52.0 | 40.0 | 5.0 | 14.772 | O | 35 |
| A4497 | 2.0 | 53.0 | 40.0 | 5.0 | 14.417 | O | 35 |
| A4498 | 1.0 | 54.0 | 40.0 | 5.0 | 14.063 | O | 35 |
| A4499 | 0.0 | 55.0 | 40.0 | 5.0 | 13.708 | O | 35 |
| A4500 | 18.0 | 32.0 | 45.0 | 5.0 | 19.081 | X | 35 |
| A4501 | 17.1 | 32.9 | 45.0 | 5.0 | 18.811 | O | 35 |
| A4502 | 17.0 | 33.0 | 45.0 | 5.0 | 18.781 | O | 35 |
| A4503 | 15.0 | 35.0 | 45.0 | 5.0 | 18.179 | O | 35 |
| A4504 | 10.0 | 40.0 | 45.0 | 5.0 | 16.675 | O | 35 |
| A4505 | 9.0 | 41.0 | 45.0 | 5.0 | 16.374 | O | 35 |
| A4506 | 8.0 | 42.0 | 45.0 | 5.0 | 16.073 | O | 35 |
| A4507 | 7.0 | 43.0 | 45.0 | 5.0 | 15.772 | O | 35 |
| A4508 | 6.0 | 44.0 | 45.0 | 5.0 | 15.471 | O | 35 |
| A4509 | 5.0 | 45.0 | 45.0 | 5.0 | 15.171 | O | 35 |
| A4510 | 4.0 | 46.0 | 45.0 | 5.0 | 14.851 | O | 35 |
| A4511 | 3.0 | 47.0 | 45.0 | 5.0 | 14.496 | O | 35 |
| A4512 | 2.0 | 48.0 | 45.0 | 5.0 | 14.141 | O | 35 |
| A4513 | 1.0 | 49.0 | 45.0 | 5.0 | 13.787 | O | 35 |
| A4514 | 0.0 | 50.0 | 45.0 | 5.0 | 13.432 | O | 35 |
| A4515 | 19.0 | 26.0 | 50.0 | 5.0 | 19.132 | X | 35 |
| A4516 | 18.6 | 26.4 | 50.0 | 5.0 | 19.012 | X | 35 |

[Table 304]

323

| A4517 | 18.5 | 26.5 | 50.0 | 5.0 | 18.982 | O | 35 |
|---|---|---|---|---|---|---|---|
| A4518 | 18.0 | 27.0 | 50.0 | 5.0 | 18.831 | O | 35 |
| A4519 | 15.0 | 30.0 | 50.0 | 5.0 | 17.929 | O | 35 |
| A4520 | 10.0 | 35.0 | 50.0 | 5.0 | 16.425 | O | 35 |
| A4521 | 9.0 | 36.0 | 50.0 | 5.0 | 16.124 | O | 35 |
| A4522 | 8.0 | 37.0 | 50.0 | 5.0 | 15.823 | O | 35 |
| A4523 | 7.0 | 38.0 | 50.0 | 5.0 | 15.522 | O | 35 |
| A4524 | 6.0 | 39.0 | 50.0 | 5.0 | 15.221 | O | 35 |
| A4525 | 5.0 | 40.0 | 50.0 | 5.0 | 14.921 | O | 35 |
| A4526 | 4.0 | 41.0 | 50.0 | 5.0 | 14.575 | O | 35 |
| A4527 | 3.0 | 42.0 | 50.0 | 5.0 | 14.220 | O | 35 |
| A4528 | 2.0 | 43.0 | 50.0 | 5.0 | 13.866 | O | 35 |
| A4529 | 1.0 | 44.0 | 50.0 | 5.0 | 13.511 | O | 35 |
| A4530 | 0.0 | 45.0 | 50.0 | 5.0 | 13.156 | O | 35 |
| A4531 | 20.0 | 20.0 | 55.0 | 5.0 | 19.183 | X | 35 |
| A4532 | 19.4 | 20.6 | 55.0 | 5.0 | 19.003 | X | 35 |
| A4533 | 19.3 | 20.7 | 55.0 | 5.0 | 18.973 | O | 35 |
| A4534 | 19.0 | 21.0 | 55.0 | 5.0 | 18.882 | O | 35 |
| A4535 | 15.0 | 25.0 | 55.0 | 5.0 | 17.679 | O | 35 |
| A4536 | 10.0 | 30.0 | 55.0 | 5.0 | 16.175 | O | 35 |
| A4537 | 9.0 | 31.0 | 55.0 | 5.0 | 15.874 | O | 35 |
| A4538 | 8.0 | 32.0 | 55.0 | 5.0 | 15.573 | O | 35 |
| A4539 | 7.0 | 33.0 | 55.0 | 5.0 | 15.272 | O | 35 |
| A4540 | 6.0 | 34.0 | 55.0 | 5.0 | 14.972 | O | 35 |
| A4541 | 5.0 | 35.0 | 55.0 | 5.0 | 14.654 | O | 35 |
| A4542 | 4.0 | 36.0 | 55.0 | 5.0 | 14.299 | O | 35 |
| A4543 | 3.0 | 37.0 | 55.0 | 5.0 | 13.944 | O | 35 |
| A4544 | 2.0 | 38.0 | 55.0 | 5.0 | 13.590 | O | 35 |
| A4545 | 1.0 | 39.0 | 55.0 | 5.0 | 13.235 | O | 35 |
| A4546 | 0.0 | 40.0 | 55.0 | 5.0 | 12.880 | O | 35 |
| A4547 | 21.0 | 14.0 | 60.0 | 5.0 | 19.234 | X | 35 |
| A4548 | 20.3 | 14.7 | 60.0 | 5.0 | 19.023 | X | 35 |
| A4549 | 20.2 | 14.8 | 60.0 | 5.0 | 18.993 | O | 35 |
| A4550 | 20.0 | 15.0 | 60.0 | 5.0 | 18.933 | O | 35 |
| A4551 | 15.0 | 20.0 | 60.0 | 5.0 | 17.429 | O | 35 |
| A4552 | 10.0 | 25.0 | 60.0 | 5.0 | 15.925 | O | 35 |
| A4553 | 9.0 | 26.0 | 60.0 | 5.0 | 15.624 | O | 35 |
| A4554 | 8.0 | 27.0 | 60.0 | 5.0 | 15.323 | O | 35 |
| A4555 | 7.0 | 28.0 | 60.0 | 5.0 | 15.022 | O | 35 |
| A4556 | 6.0 | 29.0 | 60.0 | 5.0 | 14.722 | O | 35 |
| A4557 | 5.0 | 30.0 | 60.0 | 5.0 | 14.378 | O | 35 |
| A4558 | 4.0 | 31.0 | 60.0 | 5.0 | 14.023 | O | 35 |
| A4559 | 3.0 | 32.0 | 60.0 | 5.0 | 13.668 | O | 35 |
| A4560 | 2.0 | 33.0 | 60.0 | 5.0 | 13.314 | O | 35 |
| A4561 | 1.0 | 34.0 | 60.0 | 5.0 | 12.959 | O | 35 |
| A4562 | 0.0 | 35.0 | 60.0 | 5.0 | 12.604 | O | 35 |
| A4563 | 22.0 | 8.0 | 65.0 | 5.0 | 19.285 | X | 35 |
| A4564 | 21.1 | 8.9 | 65.0 | 5.0 | 19.014 | X | 35 |
| A4565 | 21.0 | 9.0 | 65.0 | 5.0 | 18.984 | O | 35 |
| A4566 | 20.0 | 10.0 | 65.0 | 5.0 | 18.683 | O | 35 |

[Table 305]

| | | | | | | | |
|---|---|---|---|---|---|---|---|
| A4567 | 15.0 | 15.0 | 65.0 | 5.0 | 17.179 | O | 35 |
| A4568 | 10.0 | 20.0 | 65.0 | 5.0 | 15.675 | O | 35 |
| A4569 | 9.0 | 21.0 | 65.0 | 5.0 | 15.374 | O | 35 |
| A4570 | 8.0 | 22.0 | 65.0 | 5.0 | 15.073 | O | 35 |
| A4571 | 7.0 | 23.0 | 65.0 | 5.0 | 14.772 | O | 35 |
| A4572 | 6.0 | 24.0 | 65.0 | 5.0 | 14.456 | O | 35 |
| A4573 | 5.0 | 25.0 | 65.0 | 5.0 | 14.102 | O | 35 |
| A4574 | 4.0 | 26.0 | 65.0 | 5.0 | 13.747 | O | 35 |
| A4575 | 3.0 | 27.0 | 65.0 | 5.0 | 13.392 | O | 35 |
| A4576 | 2.0 | 28.0 | 65.0 | 5.0 | 13.038 | O | 35 |
| A4577 | 1.0 | 29.0 | 65.0 | 5.0 | 12.683 | O | 35 |
| A4578 | 0.0 | 30.0 | 65.0 | 5.0 | 12.328 | O | 35 |
| A4579 | 22.0 | 3.0 | 70.0 | 5.0 | 19.035 | X | 35 |
| A4580 | 21.9 | 3.1 | 70.0 | 5.0 | 19.005 | X | 35 |
| A4581 | 21.8 | 3.2 | 70.0 | 5.0 | 18.975 | O | 35 |
| A4582 | 21.0 | 4.0 | 70.0 | 5.0 | 18.734 | O | 35 |
| A4583 | 20.0 | 5.0 | 70.0 | 5.0 | 18.433 | O | 35 |
| A4584 | 15.0 | 10.0 | 70.0 | 5.0 | 16.929 | O | 35 |
| A4585 | 10.0 | 15.0 | 70.0 | 5.0 | 15.425 | O | 35 |
| A4586 | 9.0 | 16.0 | 70.0 | 5.0 | 15.124 | O | 35 |
| A4587 | 8.0 | 17.0 | 70.0 | 5.0 | 14.823 | O | 35 |
| A4588 | 7.0 | 18.0 | 70.0 | 5.0 | 14.523 | O | 35 |
| A4589 | 6.0 | 19.0 | 70.0 | 5.0 | 14.180 | O | 35 |
| A4590 | 5.0 | 20.0 | 70.0 | 5.0 | 13.826 | O | 35 |
| A4591 | 4.0 | 21.0 | 70.0 | 5.0 | 13.471 | O | 35 |
| A4592 | 3.0 | 22.0 | 70.0 | 5.0 | 13.116 | O | 35 |
| A4593 | 2.0 | 23.0 | 70.0 | 5.0 | 12.762 | O | 35 |
| A4594 | 1.0 | 24.0 | 70.0 | 5.0 | 12.407 | O | 35 |
| A4595 | 0.0 | 25.0 | 70.0 | 5.0 | 12.052 | O | 35 |
| A4596 | 13.0 | 72.0 | 5.0 | 10.0 | 19.242 | X | 69 |
| A4597 | 12.2 | 72.8 | 5.0 | 10.0 | 19.001 | X | 69 |
| A4598 | 12.1 | 72.9 | 5.0 | 10.0 | 18.971 | O | 69 |
| A4599 | 12.0 | 73.0 | 5.0 | 10.0 | 18.941 | O | 69 |
| A4600 | 10.0 | 75.0 | 5.0 | 10.0 | 18.339 | O | 69 |
| A4601 | 9.0 | 76.0 | 5.0 | 10.0 | 18.038 | O | 69 |
| A4602 | 8.0 | 77.0 | 5.0 | 10.0 | 17.737 | O | 69 |
| A4603 | 7.0 | 78.0 | 5.0 | 10.0 | 17.437 | O | 69 |
| A4604 | 6.0 | 79.0 | 5.0 | 10.0 | 17.136 | O | 69 |
| A4605 | 5.0 | 80.0 | 5.0 | 10.0 | 16.835 | O | 69 |
| A4606 | 4.0 | 81.0 | 5.0 | 10.0 | 16.534 | O | 69 |
| A4607 | 3.0 | 82.0 | 5.0 | 10.0 | 16.233 | O | 69 |
| A4608 | 2.0 | 83.0 | 5.0 | 10.0 | 15.932 | O | 69 |
| A4609 | 1.0 | 84.0 | 5.0 | 10.0 | 15.632 | O | 69 |
| A4610 | 0.0 | 85.0 | 5.0 | 10.0 | 15.305 | O | 69 |
| A4611 | 14.0 | 66.0 | 10.0 | 10.0 | 19.292 | X | 69 |
| A4612 | 13.1 | 66.9 | 10.0 | 10.0 | 19.022 | X | 69 |
| A4613 | 13.0 | 67.0 | 10.0 | 10.0 | 18.992 | O | 69 |
| A4614 | 10.0 | 70.0 | 10.0 | 10.0 | 18.089 | O | 69 |
| A4615 | 9.0 | 71.0 | 10.0 | 10.0 | 17.788 | O | 69 |
| A4616 | 8.0 | 72.0 | 10.0 | 10.0 | 17.488 | O | 69 |

[Table 306]

| A4617 | 7.0 | 73.0 | 10.0 | 10.0 | 17.187 | O | 69 |
|---|---|---|---|---|---|---|---|
| A4618 | 6.0 | 74.0 | 10.0 | 10.0 | 16.886 | O | 69 |
| A4619 | 5.0 | 75.0 | 10.0 | 10.0 | 16.585 | O | 69 |
| A4620 | 4.0 | 76.0 | 10.0 | 10.0 | 16.284 | O | 69 |
| A4621 | 3.0 | 77.0 | 10.0 | 10.0 | 15.983 | O | 69 |
| A4622 | 2.0 | 78.0 | 10.0 | 10.0 | 15.683 | O | 69 |
| A4623 | 1.0 | 79.0 | 10.0 | 10.0 | 15.382 | O | 69 |
| A4624 | 0.0 | 80.0 | 10.0 | 10.0 | 15.029 | O | 69 |
| A4625 | 14.0 | 61.0 | 15.0 | 10.0 | 19.043 | X | 69 |
| A4626 | 13.9 | 61.1 | 15.0 | 10.0 | 19.012 | X | 69 |
| A4627 | 13.8 | 61.2 | 15.0 | 10.0 | 18.982 | O | 69 |
| A4628 | 13.0 | 62.0 | 15.0 | 10.0 | 18.742 | O | 69 |
| A4629 | 10.0 | 65.0 | 15.0 | 10.0 | 17.839 | O | 69 |
| A4630 | 9.0 | 66.0 | 15.0 | 10.0 | 17.538 | O | 69 |
| A4631 | 8.0 | 67.0 | 15.0 | 10.0 | 17.238 | O | 69 |
| A4632 | 7.0 | 68.0 | 15.0 | 10.0 | 16.937 | O | 69 |
| A4633 | 6.0 | 69.0 | 15.0 | 10.0 | 16.636 | O | 69 |
| A4634 | 5.0 | 70.0 | 15.0 | 10.0 | 16.335 | O | 69 |
| A4635 | 4.0 | 71.0 | 15.0 | 10.0 | 16.034 | O | 69 |
| A4636 | 3.0 | 72.0 | 15.0 | 10.0 | 15.733 | O | 69 |
| A4637 | 2.0 | 73.0 | 15.0 | 10.0 | 15.433 | O | 69 |
| A4638 | 1.0 | 74.0 | 15.0 | 10.0 | 15.108 | O | 69 |
| A4639 | 0.0 | 75.0 | 15.0 | 10.0 | 14.753 | O | 69 |
| A4640 | 15.0 | 55.0 | 20.0 | 10.0 | 19.093 | X | 69 |
| A4641 | 14.7 | 55.3 | 20.0 | 10.0 | 19.003 | X | 69 |
| A4642 | 14.6 | 55.4 | 20.0 | 10.0 | 18.973 | O | 69 |
| A4643 | 14.0 | 56.0 | 20.0 | 10.0 | 18.793 | O | 69 |
| A4644 | 10.0 | 60.0 | 20.0 | 10.0 | 17.589 | O | 69 |
| A4645 | 9.0 | 61.0 | 20.0 | 10.0 | 17.288 | O | 69 |
| A4646 | 8.0 | 62.0 | 20.0 | 10.0 | 16.988 | O | 69 |
| A4647 | 7.0 | 63.0 | 20.0 | 10.0 | 16.687 | O | 69 |
| A4648 | 6.0 | 64.0 | 20.0 | 10.0 | 16.386 | O | 69 |
| A4649 | 5.0 | 65.0 | 20.0 | 10.0 | 16.085 | O | 69 |
| A4650 | 4.0 | 66.0 | 20.0 | 10.0 | 15.784 | O | 69 |
| A4651 | 3.0 | 67.0 | 20.0 | 10.0 | 15.483 | O | 69 |
| A4652 | 2.0 | 68.0 | 20.0 | 10.0 | 15.183 | O | 69 |
| A4653 | 1.0 | 69.0 | 20.0 | 10.0 | 14.832 | O | 69 |
| A4654 | 0.0 | 70.0 | 20.0 | 10.0 | 14.477 | O | 69 |
| A4655 | 16.0 | 49.0 | 25.0 | 10.0 | 19.144 | X | 69 |
| A4656 | 15.6 | 49.4 | 25.0 | 10.0 | 19.024 | X | 69 |
| A4657 | 15.5 | 49.5 | 25.0 | 10.0 | 18.994 | O | 69 |
| A4658 | 15.0 | 50.0 | 25.0 | 10.0 | 18.843 | O | 69 |
| A4659 | 10.0 | 55.0 | 25.0 | 10.0 | 17.339 | O | 69 |
| A4660 | 9.0 | 56.0 | 25.0 | 10.0 | 17.039 | O | 69 |
| A4661 | 8.0 | 57.0 | 25.0 | 10.0 | 16.738 | O | 69 |
| A4662 | 7.0 | 58.0 | 25.0 | 10.0 | 16.437 | O | 69 |
| A4663 | 6.0 | 59.0 | 25.0 | 10.0 | 16.136 | O | 69 |
| A4664 | 5.0 | 60.0 | 25.0 | 10.0 | 15.835 | O | 69 |
| A4665 | 4.0 | 61.0 | 25.0 | 10.0 | 15.534 | O | 69 |
| A4666 | 3.0 | 62.0 | 25.0 | 10.0 | 15.234 | O | 69 |

[Table 307]

| A4667 | 2.0 | 63.0 | 25.0 | 10.0 | 14.910 | O | 69 |
|---|---|---|---|---|---|---|---|
| A4668 | 1.0 | 64.0 | 25.0 | 10.0 | 14.556 | O | 69 |
| A4669 | 0.0 | 65.0 | 25.0 | 10.0 | 14.201 | O | 69 |
| A4670 | 17.0 | 43.0 | 30.0 | 10.0 | 19.195 | X | 69 |
| A4671 | 16.4 | 43.6 | 30.0 | 10.0 | 19.015 | X | 69 |
| A4672 | 16.3 | 43.7 | 30.0 | 10.0 | 18.985 | O | 69 |
| A4673 | 16.0 | 44.0 | 30.0 | 10.0 | 18.894 | O | 69 |
| A4674 | 15.0 | 45.0 | 30.0 | 10.0 | 18.594 | O | 69 |
| A4675 | 10.0 | 50.0 | 30.0 | 10.0 | 17.089 | O | 69 |
| A4676 | 9.0 | 51.0 | 30.0 | 10.0 | 16.789 | O | 69 |
| A4677 | 8.0 | 52.0 | 30.0 | 10.0 | 16.488 | O | 69 |
| A4678 | 7.0 | 53.0 | 30.0 | 10.0 | 16.187 | O | 69 |
| A4679 | 6.0 | 54.0 | 30.0 | 10.0 | 15.886 | O | 69 |
| A4680 | 5.0 | 55.0 | 30.0 | 10.0 | 15.585 | O | 69 |
| A4681 | 4.0 | 56.0 | 30.0 | 10.0 | 15.284 | O | 69 |
| A4682 | 3.0 | 57.0 | 30.0 | 10.0 | 14.984 | O | 69 |
| A4683 | 2.0 | 58.0 | 30.0 | 10.0 | 14.634 | O | 69 |
| A4684 | 1.0 | 59.0 | 30.0 | 10.0 | 14.280 | O | 69 |
| A4685 | 0.0 | 60.0 | 30.0 | 10.0 | 13.925 | O | 69 |
| A4686 | 18.0 | 37.0 | 35.0 | 10.0 | 19.246 | X | 69 |
| A4687 | 17.2 | 37.8 | 35.0 | 10.0 | 19.005 | X | 69 |
| A4688 | 17.1 | 37.9 | 35.0 | 10.0 | 18.975 | O | 69 |
| A4689 | 17.0 | 38.0 | 35.0 | 10.0 | 18.945 | O | 69 |
| A4690 | 15.0 | 40.0 | 35.0 | 10.0 | 18.344 | O | 69 |
| A4691 | 10.0 | 45.0 | 35.0 | 10.0 | 16.839 | O | 69 |
| A4692 | 9.0 | 46.0 | 35.0 | 10.0 | 16.539 | O | 69 |
| A4693 | 8.0 | 47.0 | 35.0 | 10.0 | 16.238 | O | 69 |
| A4694 | 7.0 | 48.0 | 35.0 | 10.0 | 15.937 | O | 69 |
| A4695 | 6.0 | 49.0 | 35.0 | 10.0 | 15.636 | O | 69 |
| A4696 | 5.0 | 50.0 | 35.0 | 10.0 | 15.335 | O | 69 |
| A4697 | 4.0 | 51.0 | 35.0 | 10.0 | 15.034 | O | 69 |
| A4698 | 3.0 | 52.0 | 35.0 | 10.0 | 14.713 | O | 69 |
| A4699 | 2.0 | 53.0 | 35.0 | 10.0 | 14.358 | O | 69 |
| A4700 | 1.0 | 54.0 | 35.0 | 10.0 | 14.004 | O | 69 |
| A4701 | 0.0 | 55.0 | 35.0 | 10.0 | 13.649 | O | 69 |
| A4702 | 19.0 | 31.0 | 40.0 | 10.0 | 19.297 | X | 69 |
| A4703 | 18.1 | 31.9 | 40.0 | 10.0 | 19.026 | X | 69 |
| A4704 | 18.0 | 32.0 | 40.0 | 10.0 | 18.996 | O | 69 |
| A4705 | 15.0 | 35.0 | 40.0 | 10.0 | 18.094 | O | 69 |
| A4706 | 10.0 | 40.0 | 40.0 | 10.0 | 16.589 | O | 69 |
| A4707 | 9.0 | 41.0 | 40.0 | 10.0 | 16.289 | O | 69 |
| A4708 | 8.0 | 42.0 | 40.0 | 10.0 | 15.988 | O | 69 |
| A4709 | 7.0 | 43.0 | 40.0 | 10.0 | 15.687 | O | 69 |
| A4710 | 6.0 | 44.0 | 40.0 | 10.0 | 15.386 | O | 69 |
| A4711 | 5.0 | 45.0 | 40.0 | 10.0 | 15.085 | O | 69 |
| A4712 | 4.0 | 46.0 | 40.0 | 10.0 | 14.785 | O | 69 |
| A4713 | 3.0 | 47.0 | 40.0 | 10.0 | 14.437 | O | 69 |
| A4714 | 2.0 | 48.0 | 40.0 | 10.0 | 14.082 | O | 69 |
| A4715 | 1.0 | 49.0 | 40.0 | 10.0 | 13.728 | O | 69 |
| A4716 | 0.0 | 50.0 | 40.0 | 10.0 | 13.373 | O | 69 |

[Table 308]

| A4717 | 19.0 | 26.0 | 45.0 | 10.0 | 19.047 | X | 69 |
|---|---|---|---|---|---|---|---|
| A4718 | 18.9 | 26.1 | 45.0 | 10.0 | 19.017 | X | 69 |
| A4719 | 18.8 | 26.2 | 45.0 | 10.0 | 18.987 | O | 69 |
| A4720 | 18.0 | 27.0 | 45.0 | 10.0 | 18.746 | O | 69 |
| A4721 | 15.0 | 30.0 | 45.0 | 10.0 | 17.844 | O | 69 |
| A4722 | 10.0 | 35.0 | 45.0 | 10.0 | 16.340 | O | 69 |
| A4723 | 9.0 | 36.0 | 45.0 | 10.0 | 16.039 | O | 69 |
| A4724 | 8.0 | 37.0 | 45.0 | 10.0 | 15.738 | O | 69 |
| A4725 | 7.0 | 38.0 | 45.0 | 10.0 | 15.437 | O | 69 |
| A4726 | 6.0 | 39.0 | 45.0 | 10.0 | 15.136 | O | 69 |
| A4727 | 5.0 | 40.0 | 45.0 | 10.0 | 14.835 | O | 69 |
| A4728 | 4.0 | 41.0 | 45.0 | 10.0 | 14.516 | O | 69 |
| A4729 | 3.0 | 42.0 | 45.0 | 10.0 | 14.161 | O | 69 |
| A4730 | 2.0 | 43.0 | 45.0 | 10.0 | 13.806 | O | 69 |
| A4731 | 1.0 | 44.0 | 45.0 | 10.0 | 13.452 | O | 69 |
| A4732 | 0.0 | 45.0 | 45.0 | 10.0 | 13.097 | O | 69 |
| A4733 | 20.0 | 20.0 | 50.0 | 10.0 | 19.098 | X | 69 |
| A4734 | 19.7 | 20.3 | 50.0 | 10.0 | 19.008 | X | 69 |
| A4735 | 19.6 | 20.4 | 50.0 | 10.0 | 18.978 | O | 69 |
| A4736 | 19.0 | 21.0 | 50.0 | 10.0 | 18.797 | O | 69 |
| A4737 | 15.0 | 25.0 | 50.0 | 10.0 | 17.594 | O | 69 |
| A4738 | 10.0 | 30.0 | 50.0 | 10.0 | 16.090 | O | 69 |
| A4739 | 9.0 | 31.0 | 50.0 | 10.0 | 15.789 | O | 69 |
| A4740 | 8.0 | 32.0 | 50.0 | 10.0 | 15.488 | O | 69 |
| A4741 | 7.0 | 33.0 | 50.0 | 10.0 | 15.187 | O | 69 |
| A4742 | 6.0 | 34.0 | 50.0 | 10.0 | 14.886 | O | 69 |
| A4743 | 5.0 | 35.0 | 50.0 | 10.0 | 14.585 | O | 69 |
| A4744 | 4.0 | 36.0 | 50.0 | 10.0 | 14.240 | O | 69 |
| A4745 | 3.0 | 37.0 | 50.0 | 10.0 | 13.885 | O | 69 |
| A4746 | 2.0 | 38.0 | 50.0 | 10.0 | 13.530 | O | 69 |
| A4747 | 1.0 | 39.0 | 50.0 | 10.0 | 13.176 | O | 69 |
| A4748 | 0.0 | 40.0 | 50.0 | 10.0 | 12.821 | O | 69 |
| A4749 | 21.0 | 14.0 | 55.0 | 10.0 | 19.149 | X | 69 |
| A4750 | 20.6 | 14.4 | 55.0 | 10.0 | 19.028 | X | 69 |
| A4751 | 20.5 | 14.5 | 55.0 | 10.0 | 18.998 | O | 69 |
| A4752 | 20.0 | 15.0 | 55.0 | 10.0 | 18.848 | O | 69 |
| A4753 | 15.0 | 20.0 | 55.0 | 10.0 | 17.344 | O | 69 |
| A4754 | 10.0 | 25.0 | 55.0 | 10.0 | 15.840 | O | 69 |
| A4755 | 9.0 | 26.0 | 55.0 | 10.0 | 15.539 | O | 69 |
| A4756 | 8.0 | 27.0 | 55.0 | 10.0 | 15.238 | O | 69 |
| A4757 | 7.0 | 28.0 | 55.0 | 10.0 | 14.937 | O | 69 |
| A4758 | 6.0 | 29.0 | 55.0 | 10.0 | 14.636 | O | 69 |
| A4759 | 5.0 | 30.0 | 55.0 | 10.0 | 14.318 | O | 69 |
| A4760 | 4.0 | 31.0 | 55.0 | 10.0 | 13.964 | O | 69 |
| A4761 | 3.0 | 32.0 | 55.0 | 10.0 | 13.609 | O | 69 |
| A4762 | 2.0 | 33.0 | 55.0 | 10.0 | 13.254 | O | 69 |
| A4763 | 1.0 | 34.0 | 55.0 | 10.0 | 12.900 | O | 69 |
| A4764 | 0.0 | 35.0 | 55.0 | 10.0 | 12.545 | O | 69 |
| A4765 | 22.0 | 8.0 | 60.0 | 10.0 | 19.200 | X | 69 |
| A4766 | 21.4 | 8.6 | 60.0 | 10.0 | 19.019 | X | 69 |

[Table 309]

| A4767 | 21.3 | 8.7 | 60.0 | 10.0 | 18.989 | O | 69 |
|---|---|---|---|---|---|---|---|
| A4768 | 21.0 | 9.0 | 60.0 | 10.0 | 18.899 | O | 69 |
| A4769 | 20.0 | 10.0 | 60.0 | 10.0 | 18.598 | O | 69 |
| A4770 | 15.0 | 15.0 | 60.0 | 10.0 | 17.094 | O | 69 |
| A4771 | 10.0 | 20.0 | 60.0 | 10.0 | 15.590 | O | 69 |
| A4772 | 9.0 | 21.0 | 60.0 | 10.0 | 15.289 | O | 69 |
| A4773 | 8.0 | 22.0 | 60.0 | 10.0 | 14.988 | O | 69 |
| A4774 | 7.0 | 23.0 | 60.0 | 10.0 | 14.687 | O | 69 |
| A4775 | 6.0 | 24.0 | 60.0 | 10.0 | 14.386 | O | 69 |
| A4776 | 5.0 | 25.0 | 60.0 | 10.0 | 14.042 | O | 69 |
| A4777 | 4.0 | 26.0 | 60.0 | 10.0 | 13.688 | O | 69 |
| A4778 | 3.0 | 27.0 | 60.0 | 10.0 | 13.333 | O | 69 |
| A4779 | 2.0 | 28.0 | 60.0 | 10.0 | 12.978 | O | 69 |
| A4780 | 1.0 | 29.0 | 60.0 | 10.0 | 12.624 | O | 69 |
| A4781 | 0.0 | 30.0 | 60.0 | 10.0 | 12.269 | O | 69 |
| A4782 | 23.0 | 2.0 | 65.0 | 10.0 | 19.251 | X | 69 |
| A4783 | 22.2 | 2.8 | 65.0 | 10.0 | 19.010 | X | 69 |
| A4784 | 22.1 | 2.9 | 65.0 | 10.0 | 18.980 | O | 69 |
| A4785 | 22.0 | 3.0 | 65.0 | 10.0 | 18.950 | O | 69 |
| A4786 | 20.0 | 5.0 | 65.0 | 10.0 | 18.348 | O | 69 |
| A4787 | 15.0 | 10.0 | 65.0 | 10.0 | 16.844 | O | 69 |
| A4788 | 10.0 | 15.0 | 65.0 | 10.0 | 15.340 | O | 69 |
| A4789 | 9.0 | 16.0 | 65.0 | 10.0 | 15.039 | O | 69 |
| A4790 | 8.0 | 17.0 | 65.0 | 10.0 | 14.738 | O | 69 |
| A4791 | 7.0 | 18.0 | 65.0 | 10.0 | 14.437 | O | 69 |
| A4792 | 6.0 | 19.0 | 65.0 | 10.0 | 14.121 | O | 69 |
| A4793 | 5.0 | 20.0 | 65.0 | 10.0 | 13.766 | O | 69 |
| A4794 | 4.0 | 21.0 | 65.0 | 10.0 | 13.412 | O | 69 |
| A4795 | 3.0 | 22.0 | 65.0 | 10.0 | 13.057 | O | 69 |
| A4796 | 2.0 | 23.0 | 65.0 | 10.0 | 12.702 | O | 69 |
| A4797 | 1.0 | 24.0 | 65.0 | 10.0 | 12.348 | O | 69 |
| A4798 | 0.0 | 25.0 | 65.0 | 10.0 | 11.993 | O | 69 |
| A4799 | 14.0 | 66.0 | 5.0 | 15.0 | 19.207 | X | 102 |
| A4800 | 13.4 | 66.6 | 5.0 | 15.0 | 19.027 | X | 102 |
| A4801 | 13.3 | 66.7 | 5.0 | 15.0 | 18.997 | O | 102 |
| A4802 | 13.0 | 67.0 | 5.0 | 15.0 | 18.906 | O | 102 |
| A4803 | 10.0 | 70.0 | 5.0 | 15.0 | 18.004 | O | 102 |
| A4804 | 9.0 | 71.0 | 5.0 | 15.0 | 17.703 | O | 102 |
| A4805 | 8.0 | 72.0 | 5.0 | 15.0 | 17.402 | O | 102 |
| A4806 | 7.0 | 73.0 | 5.0 | 15.0 | 17.101 | O | 102 |
| A4807 | 6.0 | 74.0 | 5.0 | 15.0 | 16.801 | O | 102 |
| A4808 | 5.0 | 75.0 | 5.0 | 15.0 | 16.500 | O | 102 |
| A4809 | 4.0 | 76.0 | 5.0 | 15.0 | 16.199 | O | 102 |
| A4810 | 3.0 | 77.0 | 5.0 | 15.0 | 15.898 | O | 102 |
| A4811 | 2.0 | 78.0 | 5.0 | 15.0 | 15.597 | O | 102 |
| A4812 | 1.0 | 79.0 | 5.0 | 15.0 | 15.296 | O | 102 |
| A4813 | 0.0 | 80.0 | 5.0 | 15.0 | 14.970 | O | 102 |
| A4814 | 15.0 | 60.0 | 10.0 | 15.0 | 19.258 | X | 102 |
| A4815 | 14.2 | 60.8 | 10.0 | 15.0 | 19.017 | X | 102 |
| A4816 | 14.1 | 60.9 | 10.0 | 15.0 | 18.987 | O | 102 |

[Table 310]

| A4817 | 14.0 | 61.0 | 10.0 | 15.0 | 18.957 | O | 102 |
|-------|------|------|------|------|--------|---|-----|
| A4818 | 10.0 | 65.0 | 10.0 | 15.0 | 17.754 | O | 102 |
| A4819 | 9.0 | 66.0 | 10.0 | 15.0 | 17.453 | O | 102 |
| A4820 | 8.0 | 67.0 | 10.0 | 15.0 | 17.152 | O | 102 |
| A4821 | 7.0 | 68.0 | 10.0 | 15.0 | 16.852 | O | 102 |
| A4822 | 6.0 | 69.0 | 10.0 | 15.0 | 16.551 | O | 102 |
| A4823 | 5.0 | 70.0 | 10.0 | 15.0 | 16.250 | O | 102 |
| A4824 | 4.0 | 71.0 | 10.0 | 15.0 | 15.949 | O | 102 |
| A4825 | 3.0 | 72.0 | 10.0 | 15.0 | 15.648 | O | 102 |
| A4826 | 2.0 | 73.0 | 10.0 | 15.0 | 15.347 | O | 102 |
| A4827 | 1.0 | 74.0 | 10.0 | 15.0 | 15.047 | O | 102 |
| A4828 | 0.0 | 75.0 | 10.0 | 15.0 | 14.694 | O | 102 |
| A4829 | 15.0 | 55.0 | 15.0 | 15.0 | 19.008 | X | 102 |
| A4830 | 14.9 | 55.1 | 15.0 | 15.0 | 18.978 | O | 102 |
| A4831 | 14.0 | 56.0 | 15.0 | 15.0 | 18.707 | O | 102 |
| A4832 | 10.0 | 60.0 | 15.0 | 15.0 | 17.504 | O | 102 |
| A4833 | 9.0 | 61.0 | 15.0 | 15.0 | 17.203 | O | 102 |
| A4834 | 8.0 | 62.0 | 15.0 | 15.0 | 16.902 | O | 102 |
| A4835 | 7.0 | 63.0 | 15.0 | 15.0 | 16.602 | O | 102 |
| A4836 | 6.0 | 64.0 | 15.0 | 15.0 | 16.301 | O | 102 |
| A4837 | 5.0 | 65.0 | 15.0 | 15.0 | 16.000 | O | 102 |
| A4838 | 4.0 | 66.0 | 15.0 | 15.0 | 15.699 | O | 102 |
| A4839 | 3.0 | 67.0 | 15.0 | 15.0 | 15.398 | O | 102 |
| A4840 | 2.0 | 68.0 | 15.0 | 15.0 | 15.097 | O | 102 |
| A4841 | 1.0 | 69.0 | 15.0 | 15.0 | 14.772 | O | 102 |
| A4842 | 0.0 | 70.0 | 15.0 | 15.0 | 14.418 | O | 102 |
| A4843 | 16.0 | 49.0 | 20.0 | 15.0 | 19.059 | X | 102 |
| A4844 | 15.9 | 49.1 | 20.0 | 15.0 | 19.029 | X | 102 |
| A4845 | 15.8 | 49.2 | 20.0 | 15.0 | 18.999 | O | 102 |
| A4846 | 15.0 | 50.0 | 20.0 | 15.0 | 18.758 | O | 102 |
| A4847 | 10.0 | 55.0 | 20.0 | 15.0 | 17.254 | O | 102 |
| A4848 | 9.0 | 56.0 | 20.0 | 15.0 | 16.953 | O | 102 |
| A4849 | 8.0 | 57.0 | 20.0 | 15.0 | 16.652 | O | 102 |
| A4850 | 7.0 | 58.0 | 20.0 | 15.0 | 16.352 | O | 102 |
| A4851 | 6.0 | 59.0 | 20.0 | 15.0 | 16.051 | O | 102 |
| A4852 | 5.0 | 60.0 | 20.0 | 15.0 | 15.750 | O | 102 |
| A4853 | 4.0 | 61.0 | 20.0 | 15.0 | 15.449 | O | 102 |
| A4854 | 3.0 | 62.0 | 20.0 | 15.0 | 15.148 | O | 102 |
| A4855 | 2.0 | 63.0 | 20.0 | 15.0 | 14.847 | O | 102 |
| A4856 | 1.0 | 64.0 | 20.0 | 15.0 | 14.496 | O | 102 |
| A4857 | 0.0 | 65.0 | 20.0 | 15.0 | 14.142 | O | 102 |
| A4858 | 17.0 | 43.0 | 25.0 | 15.0 | 19.110 | X | 102 |
| A4859 | 16.7 | 43.3 | 25.0 | 15.0 | 19.020 | X | 102 |
| A4860 | 16.6 | 43.4 | 25.0 | 15.0 | 18.990 | O | 102 |
| A4861 | 16.0 | 44.0 | 25.0 | 15.0 | 18.809 | O | 102 |
| A4862 | 15.0 | 45.0 | 25.0 | 15.0 | 18.508 | O | 102 |
| A4863 | 10.0 | 50.0 | 25.0 | 15.0 | 17.004 | O | 102 |
| A4864 | 9.0 | 51.0 | 25.0 | 15.0 | 16.703 | O | 102 |
| A4865 | 8.0 | 52.0 | 25.0 | 15.0 | 16.403 | O | 102 |
| A4866 | 7.0 | 53.0 | 25.0 | 15.0 | 16.102 | O | 102 |

[Table 311]

| A4867 | 6.0 | 54.0 | 25.0 | 15.0 | 15.801 | O | 102 |
|---|---|---|---|---|---|---|---|
| A4868 | 5.0 | 55.0 | 25.0 | 15.0 | 15.500 | O | 102 |
| A4869 | 4.0 | 56.0 | 25.0 | 15.0 | 15.199 | O | 102 |
| A4870 | 3.0 | 57.0 | 25.0 | 15.0 | 14.898 | O | 102 |
| A4871 | 2.0 | 58.0 | 25.0 | 15.0 | 14.575 | O | 102 |
| A4872 | 1.0 | 59.0 | 25.0 | 15.0 | 14.220 | O | 102 |
| A4873 | 0.0 | 60.0 | 25.0 | 15.0 | 13.866 | O | 102 |
| A4874 | 18.0 | 37.0 | 30.0 | 15.0 | 19.161 | X | 102 |
| A4875 | 17.5 | 37.5 | 30.0 | 15.0 | 19.010 | X | 102 |
| A4876 | 17.4 | 37.6 | 30.0 | 15.0 | 18.980 | O | 102 |
| A4877 | 17.0 | 38.0 | 30.0 | 15.0 | 18.860 | O | 102 |
| A4878 | 15.0 | 40.0 | 30.0 | 15.0 | 18.258 | O | 102 |
| A4879 | 10.0 | 45.0 | 30.0 | 15.0 | 16.754 | O | 102 |
| A4880 | 9.0 | 46.0 | 30.0 | 15.0 | 16.453 | O | 102 |
| A4881 | 8.0 | 47.0 | 30.0 | 15.0 | 16.153 | O | 102 |
| A4882 | 7.0 | 48.0 | 30.0 | 15.0 | 15.852 | O | 102 |
| A4883 | 6.0 | 49.0 | 30.0 | 15.0 | 15.551 | O | 102 |
| A4884 | 5.0 | 50.0 | 30.0 | 15.0 | 15.250 | O | 102 |
| A4885 | 4.0 | 51.0 | 30.0 | 15.0 | 14.949 | O | 102 |
| A4886 | 3.0 | 52.0 | 30.0 | 15.0 | 14.648 | O | 102 |
| A4887 | 2.0 | 53.0 | 30.0 | 15.0 | 14.299 | O | 102 |
| A4888 | 1.0 | 54.0 | 30.0 | 15.0 | 13.944 | O | 102 |
| A4889 | 0.0 | 55.0 | 30.0 | 15.0 | 13.590 | O | 102 |
| A4890 | 19.0 | 31.0 | 35.0 | 15.0 | 19.212 | X | 102 |
| A4891 | 18.3 | 31.7 | 35.0 | 15.0 | 19.001 | X | 102 |
| A4892 | 18.2 | 31.8 | 35.0 | 15.0 | 18.971 | O | 102 |
| A4893 | 18.0 | 32.0 | 35.0 | 15.0 | 18.911 | O | 102 |
| A4894 | 15.0 | 35.0 | 35.0 | 15.0 | 18.008 | O | 102 |
| A4895 | 10.0 | 40.0 | 35.0 | 15.0 | 16.504 | O | 102 |
| A4896 | 9.0 | 41.0 | 35.0 | 15.0 | 16.203 | O | 102 |
| A4897 | 8.0 | 42.0 | 35.0 | 15.0 | 15.903 | O | 102 |
| A4898 | 7.0 | 43.0 | 35.0 | 15.0 | 15.602 | O | 102 |
| A4899 | 6.0 | 44.0 | 35.0 | 15.0 | 15.301 | O | 102 |
| A4900 | 5.0 | 45.0 | 35.0 | 15.0 | 15.000 | O | 102 |
| A4901 | 4.0 | 46.0 | 35.0 | 15.0 | 14.699 | O | 102 |
| A4902 | 3.0 | 47.0 | 35.0 | 15.0 | 14.378 | O | 102 |
| A4903 | 2.0 | 48.0 | 35.0 | 15.0 | 14.023 | O | 102 |
| A4904 | 1.0 | 49.0 | 35.0 | 15.0 | 13.668 | O | 102 |
| A4905 | 0.0 | 50.0 | 35.0 | 15.0 | 13.314 | O | 102 |
| A4906 | 20.0 | 25.0 | 40.0 | 15.0 | 19.263 | X | 102 |
| A4907 | 19.2 | 25.8 | 40.0 | 15.0 | 19.022 | X | 102 |
| A4908 | 19.1 | 25.9 | 40.0 | 15.0 | 18.992 | O | 102 |
| A4909 | 19.0 | 26.0 | 40.0 | 15.0 | 18.962 | O | 102 |
| A4910 | 15.0 | 30.0 | 40.0 | 15.0 | 17.758 | O | 102 |
| A4911 | 10.0 | 35.0 | 40.0 | 15.0 | 16.254 | O | 102 |
| A4912 | 9.0 | 36.0 | 40.0 | 15.0 | 15.953 | O | 102 |
| A4913 | 8.0 | 37.0 | 40.0 | 15.0 | 15.653 | O | 102 |
| A4914 | 7.0 | 38.0 | 40.0 | 15.0 | 15.352 | O | 102 |
| A4915 | 6.0 | 39.0 | 40.0 | 15.0 | 15.051 | O | 102 |
| A4916 | 5.0 | 40.0 | 40.0 | 15.0 | 14.750 | O | 102 |

[Table 312]

| | | | | | | | |
|---|---|---|---|---|---|---|---|
| A4917 | 4.0 | 41.0 | 40.0 | 15.0 | 14.449 | O | 102 |
| A4918 | 3.0 | 42.0 | 40.0 | 15.0 | 14.102 | O | 102 |
| A4919 | 2.0 | 43.0 | 40.0 | 15.0 | 13.747 | O | 102 |
| A4920 | 1.0 | 44.0 | 40.0 | 15.0 | 13.392 | O | 102 |
| A4921 | 0.0 | 45.0 | 40.0 | 15.0 | 13.038 | O | 102 |
| A4922 | 20.0 | 20.0 | 45.0 | 15.0 | 19.013 | X | 102 |
| A4923 | 19.9 | 20.1 | 45.0 | 15.0 | 18.983 | O | 102 |
| A4924 | 19.0 | 21.0 | 45.0 | 15.0 | 18.712 | O | 102 |
| A4925 | 15.0 | 25.0 | 45.0 | 15.0 | 17.509 | O | 102 |
| A4926 | 10.0 | 30.0 | 45.0 | 15.0 | 16.004 | O | 102 |
| A4927 | 9.0 | 31.0 | 45.0 | 15.0 | 15.704 | O | 102 |
| A4928 | 8.0 | 32.0 | 45.0 | 15.0 | 15.403 | O | 102 |
| A4929 | 7.0 | 33.0 | 45.0 | 15.0 | 15.102 | O | 102 |
| A4930 | 6.0 | 34.0 | 45.0 | 15.0 | 14.801 | O | 102 |
| A4931 | 5.0 | 35.0 | 45.0 | 15.0 | 14.500 | O | 102 |
| A4932 | 4.0 | 36.0 | 45.0 | 15.0 | 14.181 | O | 102 |
| A4933 | 3.0 | 37.0 | 45.0 | 15.0 | 13.826 | O | 102 |
| A4934 | 2.0 | 38.0 | 45.0 | 15.0 | 13.471 | O | 102 |
| A4935 | 1.0 | 39.0 | 45.0 | 15.0 | 13.116 | O | 102 |
| A4936 | 0.0 | 40.0 | 45.0 | 15.0 | 12.762 | O | 102 |
| A4937 | 21.0 | 14.0 | 50.0 | 15.0 | 19.064 | X | 102 |
| A4938 | 20.8 | 14.2 | 50.0 | 15.0 | 19.003 | X | 102 |
| A4939 | 20.7 | 14.3 | 50.0 | 15.0 | 18.973 | O | 102 |
| A4940 | 20.0 | 15.0 | 50.0 | 15.0 | 18.763 | O | 102 |
| A4941 | 15.0 | 20.0 | 50.0 | 15.0 | 17.259 | O | 102 |
| A4942 | 10.0 | 25.0 | 50.0 | 15.0 | 15.754 | O | 102 |
| A4943 | 9.0 | 26.0 | 50.0 | 15.0 | 15.454 | O | 102 |
| A4944 | 8.0 | 27.0 | 50.0 | 15.0 | 15.153 | O | 102 |
| A4945 | 7.0 | 28.0 | 50.0 | 15.0 | 14.852 | O | 102 |
| A4946 | 6.0 | 29.0 | 50.0 | 15.0 | 14.551 | O | 102 |
| A4947 | 5.0 | 30.0 | 50.0 | 15.0 | 14.250 | O | 102 |
| A4948 | 4.0 | 31.0 | 50.0 | 15.0 | 13.905 | O | 102 |
| A4949 | 3.0 | 32.0 | 50.0 | 15.0 | 13.550 | O | 102 |
| A4950 | 2.0 | 33.0 | 50.0 | 15.0 | 13.195 | O | 102 |
| A4951 | 1.0 | 34.0 | 50.0 | 15.0 | 12.840 | O | 102 |
| A4952 | 0.0 | 35.0 | 50.0 | 15.0 | 12.486 | O | 102 |
| A4953 | 22.0 | 8.0 | 55.0 | 15.0 | 19.114 | X | 102 |
| A4954 | 21.7 | 8.3 | 55.0 | 15.0 | 19.024 | X | 102 |
| A4955 | 21.6 | 8.4 | 55.0 | 15.0 | 18.994 | O | 102 |
| A4956 | 21.0 | 9.0 | 55.0 | 15.0 | 18.814 | O | 102 |
| A4957 | 15.0 | 15.0 | 55.0 | 15.0 | 17.009 | O | 102 |
| A4958 | 10.0 | 20.0 | 55.0 | 15.0 | 15.504 | O | 102 |
| A4959 | 9.0 | 21.0 | 55.0 | 15.0 | 15.204 | O | 102 |
| A4960 | 8.0 | 22.0 | 55.0 | 15.0 | 14.903 | O | 102 |
| A4961 | 7.0 | 23.0 | 55.0 | 15.0 | 14.602 | O | 102 |
| A4962 | 6.0 | 24.0 | 55.0 | 15.0 | 14.301 | O | 102 |
| A4963 | 5.0 | 25.0 | 55.0 | 15.0 | 13.983 | O | 102 |
| A4964 | 4.0 | 26.0 | 55.0 | 15.0 | 13.629 | O | 102 |
| A4965 | 3.0 | 27.0 | 55.0 | 15.0 | 13.274 | O | 102 |
| A4966 | 2.0 | 28.0 | 55.0 | 15.0 | 12.919 | O | 102 |

[Table 313]

| A4967 | 1.0 | 29.0 | 55.0 | 15.0 | 12.565 | O | 102 |
|---|---|---|---|---|---|---|---|
| A4968 | 0.0 | 30.0 | 55.0 | 15.0 | 12.210 | O | 102 |
| A4969 | 23.0 | 2.0 | 60.0 | 15.0 | 19.165 | X | 102 |
| A4970 | 22.5 | 2.5 | 60.0 | 15.0 | 19.015 | X | 102 |
| A4971 | 22.4 | 2.6 | 60.0 | 15.0 | 18.985 | O | 102 |
| A4972 | 22.0 | 3.0 | 60.0 | 15.0 | 18.865 | O | 102 |
| A4973 | 20.0 | 5.0 | 60.0 | 15.0 | 18.263 | O | 102 |
| A4974 | 15.0 | 10.0 | 60.0 | 15.0 | 16.759 | O | 102 |
| A4975 | 10.0 | 15.0 | 60.0 | 15.0 | 15.255 | O | 102 |
| A4976 | 9.0 | 16.0 | 60.0 | 15.0 | 14.954 | O | 102 |
| A4977 | 8.0 | 17.0 | 60.0 | 15.0 | 14.653 | O | 102 |
| A4978 | 7.0 | 18.0 | 60.0 | 15.0 | 14.352 | O | 102 |
| A4979 | 6.0 | 19.0 | 60.0 | 15.0 | 14.051 | O | 102 |
| A4980 | 5.0 | 20.0 | 60.0 | 15.0 | 13.707 | O | 102 |
| A4981 | 4.0 | 21.0 | 60.0 | 15.0 | 13.353 | O | 102 |
| A4982 | 3.0 | 22.0 | 60.0 | 15.0 | 12.998 | O | 102 |
| A4983 | 2.0 | 23.0 | 60.0 | 15.0 | 12.643 | O | 102 |
| A4984 | 1.0 | 24.0 | 60.0 | 15.0 | 12.289 | O | 102 |
| A4985 | 0.0 | 25.0 | 60.0 | 15.0 | 11.934 | O | 102 |
| A4986 | 15.0 | 60.0 | 5.0 | 20.0 | 19.173 | X | 136 |
| A4987 | 14.5 | 60.5 | 5.0 | 20.0 | 19.023 | X | 136 |
| A4988 | 14.4 | 60.6 | 5.0 | 20.0 | 18.992 | O | 136 |
| A4989 | 14.0 | 61.0 | 5.0 | 20.0 | 18.872 | O | 136 |
| A4990 | 10.0 | 65.0 | 5.0 | 20.0 | 17.669 | O | 136 |
| A4991 | 9.0 | 66.0 | 5.0 | 20.0 | 17.368 | O | 136 |
| A4992 | 8.0 | 67.0 | 5.0 | 20.0 | 17.067 | O | 136 |
| A4993 | 7.0 | 68.0 | 5.0 | 20.0 | 16.766 | O | 136 |
| A4994 | 6.0 | 69.0 | 5.0 | 20.0 | 16.465 | O | 136 |
| A4995 | 5.0 | 70.0 | 5.0 | 20.0 | 16.165 | O | 136 |
| A4996 | 4.0 | 71.0 | 5.0 | 20.0 | 15.864 | O | 136 |
| A4997 | 3.0 | 72.0 | 5.0 | 20.0 | 15.563 | O | 136 |
| A4998 | 2.0 | 73.0 | 5.0 | 20.0 | 15.262 | O | 136 |
| A4999 | 1.0 | 74.0 | 5.0 | 20.0 | 14.961 | O | 136 |
| A5000 | 0.0 | 75.0 | 5.0 | 20.0 | 14.634 | O | 136 |
| A5001 | 16.0 | 54.0 | 10.0 | 20.0 | 19.224 | X | 136 |
| A5002 | 15.3 | 54.7 | 10.0 | 20.0 | 19.013 | X | 136 |
| A5003 | 15.2 | 54.8 | 10.0 | 20.0 | 18.983 | O | 136 |
| A5004 | 15.0 | 55.0 | 10.0 | 20.0 | 18.923 | O | 136 |
| A5005 | 10.0 | 60.0 | 10.0 | 20.0 | 17.419 | O | 136 |
| A5006 | 9.0 | 61.0 | 10.0 | 20.0 | 17.118 | O | 136 |
| A5007 | 8.0 | 62.0 | 10.0 | 20.0 | 16.817 | O | 136 |
| A5008 | 7.0 | 63.0 | 10.0 | 20.0 | 16.516 | O | 136 |
| A5009 | 6.0 | 64.0 | 10.0 | 20.0 | 16.216 | O | 136 |
| A5010 | 5.0 | 65.0 | 10.0 | 20.0 | 15.915 | O | 136 |
| A5011 | 4.0 | 66.0 | 10.0 | 20.0 | 15.614 | O | 136 |
| A5012 | 3.0 | 67.0 | 10.0 | 20.0 | 15.313 | O | 136 |
| A5013 | 2.0 | 68.0 | 10.0 | 20.0 | 15.012 | O | 136 |
| A5014 | 1.0 | 69.0 | 10.0 | 20.0 | 14.711 | O | 136 |
| A5015 | 0.0 | 70.0 | 10.0 | 20.0 | 14.358 | O | 136 |
| A5016 | 17.0 | 48.0 | 15.0 | 20.0 | 19.275 | X | 136 |

[Table 314]

| | | | | | | | |
|---|---|---|---|---|---|---|---|
| A5017 | 16.1 | 48.9 | 15.0 | 20.0 | 19.004 | X | 136 |
| A5018 | 16.0 | 49.0 | 15.0 | 20.0 | 18.974 | O | 136 |
| A5019 | 15.0 | 50.0 | 15.0 | 20.0 | 18.673 | O | 136 |
| A5020 | 10.0 | 55.0 | 15.0 | 20.0 | 17.169 | O | 136 |
| A5021 | 9.0 | 56.0 | 15.0 | 20.0 | 16.868 | O | 136 |
| A5022 | 8.0 | 57.0 | 15.0 | 20.0 | 16.567 | O | 136 |
| A5023 | 7.0 | 58.0 | 15.0 | 20.0 | 16.266 | O | 136 |
| A5024 | 6.0 | 59.0 | 15.0 | 20.0 | 15.966 | O | 136 |
| A5025 | 5.0 | 60.0 | 15.0 | 20.0 | 15.665 | O | 136 |
| A5026 | 4.0 | 61.0 | 15.0 | 20.0 | 15.364 | O | 136 |
| A5027 | 3.0 | 62.0 | 15.0 | 20.0 | 15.063 | O | 136 |
| A5028 | 2.0 | 63.0 | 15.0 | 20.0 | 14.762 | O | 136 |
| A5029 | 1.0 | 64.0 | 15.0 | 20.0 | 14.437 | O | 136 |
| A5030 | 0.0 | 65.0 | 15.0 | 20.0 | 14.082 | O | 136 |
| A5031 | 17.0 | 43.0 | 20.0 | 20.0 | 19.025 | X | 136 |
| A5032 | 16.9 | 43.1 | 20.0 | 20.0 | 18.995 | O | 136 |
| A5033 | 16.0 | 44.0 | 20.0 | 20.0 | 18.724 | O | 136 |
| A5034 | 15.0 | 45.0 | 20.0 | 20.0 | 18.423 | O | 136 |
| A5035 | 10.0 | 50.0 | 20.0 | 20.0 | 16.919 | O | 136 |
| A5036 | 9.0 | 51.0 | 20.0 | 20.0 | 16.618 | O | 136 |
| A5037 | 8.0 | 52.0 | 20.0 | 20.0 | 16.317 | O | 136 |
| A5038 | 7.0 | 53.0 | 20.0 | 20.0 | 16.016 | O | 136 |
| A5039 | 6.0 | 54.0 | 20.0 | 20.0 | 15.716 | O | 136 |
| A5040 | 5.0 | 55.0 | 20.0 | 20.0 | 15.415 | O | 136 |
| A5041 | 4.0 | 56.0 | 20.0 | 20.0 | 15.114 | O | 136 |
| A5042 | 3.0 | 57.0 | 20.0 | 20.0 | 14.813 | O | 136 |
| A5043 | 2.0 | 58.0 | 20.0 | 20.0 | 14.512 | O | 136 |
| A5044 | 1.0 | 59.0 | 20.0 | 20.0 | 14.161 | O | 136 |
| A5045 | 0.0 | 60.0 | 20.0 | 20.0 | 13.806 | O | 136 |
| A5046 | 18.0 | 37.0 | 25.0 | 20.0 | 19.076 | X | 136 |
| A5047 | 17.8 | 37.2 | 25.0 | 20.0 | 19.015 | X | 136 |
| A5048 | 17.7 | 37.3 | 25.0 | 20.0 | 18.985 | O | 136 |
| A5049 | 17.0 | 38.0 | 25.0 | 20.0 | 18.775 | O | 136 |
| A5050 | 15.0 | 40.0 | 25.0 | 20.0 | 18.173 | O | 136 |
| A5051 | 10.0 | 45.0 | 25.0 | 20.0 | 16.669 | O | 136 |
| A5052 | 9.0 | 46.0 | 25.0 | 20.0 | 16.368 | O | 136 |
| A5053 | 8.0 | 47.0 | 25.0 | 20.0 | 16.067 | O | 136 |
| A5054 | 7.0 | 48.0 | 25.0 | 20.0 | 15.767 | O | 136 |
| A5055 | 6.0 | 49.0 | 25.0 | 20.0 | 15.466 | O | 136 |
| A5056 | 5.0 | 50.0 | 25.0 | 20.0 | 15.165 | O | 136 |
| A5057 | 4.0 | 51.0 | 25.0 | 20.0 | 14.864 | O | 136 |
| A5058 | 3.0 | 52.0 | 25.0 | 20.0 | 14.563 | O | 136 |
| A5059 | 2.0 | 53.0 | 25.0 | 20.0 | 14.240 | O | 136 |
| A5060 | 1.0 | 54.0 | 25.0 | 20.0 | 13.885 | O | 136 |
| A5061 | 0.0 | 55.0 | 25.0 | 20.0 | 13.531 | O | 136 |
| A5062 | 19.0 | 31.0 | 30.0 | 20.0 | 19.127 | X | 136 |
| A5063 | 18.6 | 31.4 | 30.0 | 20.0 | 19.006 | X | 136 |
| A5064 | 18.5 | 31.5 | 30.0 | 20.0 | 18.976 | O | 136 |
| A5065 | 18.0 | 32.0 | 30.0 | 20.0 | 18.826 | O | 136 |
| A5066 | 15.0 | 35.0 | 30.0 | 20.0 | 17.923 | O | 136 |

[0457]

[Table 315]

| A5067 | 10.0 | 40.0 | 30.0 | 20.0 | 16.419 | O | 136 |
|---|---|---|---|---|---|---|---|
| A5068 | 9.0 | 41.0 | 30.0 | 20.0 | 16.118 | O | 136 |
| A5069 | 8.0 | 42.0 | 30.0 | 20.0 | 15.817 | O | 136 |
| A5070 | 7.0 | 43.0 | 30.0 | 20.0 | 15.517 | O | 136 |
| A5071 | 6.0 | 44.0 | 30.0 | 20.0 | 15.216 | O | 136 |
| A5072 | 5.0 | 45.0 | 30.0 | 20.0 | 14.915 | O | 136 |
| A5073 | 4.0 | 46.0 | 30.0 | 20.0 | 14.614 | O | 136 |
| A5074 | 3.0 | 47.0 | 30.0 | 20.0 | 14.313 | O | 136 |
| A5075 | 2.0 | 48.0 | 30.0 | 20.0 | 13.964 | O | 136 |
| A5076 | 1.0 | 49.0 | 30.0 | 20.0 | 13.609 | O | 136 |
| A5077 | 0.0 | 50.0 | 30.0 | 20.0 | 13.255 | O | 136 |
| A5078 | 20.0 | 25.0 | 35.0 | 20.0 | 19.177 | X | 136 |
| A5079 | 19.5 | 25.5 | 35.0 | 20.0 | 19.027 | X | 136 |
| A5080 | 19.4 | 25.6 | 35.0 | 20.0 | 18.997 | O | 136 |
| A5081 | 19.0 | 26.0 | 35.0 | 20.0 | 18.877 | O | 136 |
| A5082 | 15.0 | 30.0 | 35.0 | 20.0 | 17.673 | O | 136 |
| A5083 | 10.0 | 35.0 | 35.0 | 20.0 | 16.169 | O | 136 |
| A5084 | 9.0 | 36.0 | 35.0 | 20.0 | 15.868 | O | 136 |
| A5085 | 8.0 | 37.0 | 35.0 | 20.0 | 15.567 | O | 136 |
| A5086 | 7.0 | 38.0 | 35.0 | 20.0 | 15.267 | O | 136 |
| A5087 | 6.0 | 39.0 | 35.0 | 20.0 | 14.966 | O | 136 |
| A5088 | 5.0 | 40.0 | 35.0 | 20.0 | 14.665 | O | 136 |
| A5089 | 4.0 | 41.0 | 35.0 | 20.0 | 14.364 | O | 136 |
| A5090 | 3.0 | 42.0 | 35.0 | 20.0 | 14.043 | O | 136 |
| A5091 | 2.0 | 43.0 | 35.0 | 20.0 | 13.688 | O | 136 |
| A5092 | 1.0 | 44.0 | 35.0 | 20.0 | 13.333 | O | 136 |
| A5093 | 0.0 | 45.0 | 35.0 | 20.0 | 12.979 | O | 136 |
| A5094 | 21.0 | 19.0 | 40.0 | 20.0 | 19.228 | X | 136 |
| A5095 | 20.3 | 19.7 | 40.0 | 20.0 | 19.018 | X | 136 |
| A5096 | 20.2 | 19.8 | 40.0 | 20.0 | 18.988 | O | 136 |
| A5097 | 20.0 | 20.0 | 40.0 | 20.0 | 18.927 | O | 136 |
| A5098 | 15.0 | 25.0 | 40.0 | 20.0 | 17.423 | O | 136 |
| A5099 | 10.0 | 30.0 | 40.0 | 20.0 | 15.919 | O | 136 |
| A5100 | 9.0 | 31.0 | 40.0 | 20.0 | 15.618 | O | 136 |
| A5101 | 8.0 | 32.0 | 40.0 | 20.0 | 15.317 | O | 136 |
| A5102 | 7.0 | 33.0 | 40.0 | 20.0 | 15.017 | O | 136 |
| A5103 | 6.0 | 34.0 | 40.0 | 20.0 | 14.716 | O | 136 |
| A5104 | 5.0 | 35.0 | 40.0 | 20.0 | 14.415 | O | 136 |
| A5105 | 4.0 | 36.0 | 40.0 | 20.0 | 14.114 | O | 136 |
| A5106 | 3.0 | 37.0 | 40.0 | 20.0 | 13.767 | O | 136 |
| A5107 | 2.0 | 38.0 | 40.0 | 20.0 | 13.412 | O | 136 |
| A5108 | 1.0 | 39.0 | 40.0 | 20.0 | 13.057 | O | 136 |
| A5109 | 0.0 | 40.0 | 40.0 | 20.0 | 12.703 | O | 136 |
| A5110 | 22.0 | 13.0 | 45.0 | 20.0 | 19.279 | X | 136 |
| A5111 | 21.1 | 13.9 | 45.0 | 20.0 | 19.008 | X | 136 |
| A5112 | 21.0 | 14.0 | 45.0 | 20.0 | 18.978 | O | 136 |
| A5113 | 20.0 | 15.0 | 45.0 | 20.0 | 18.678 | O | 136 |
| A5114 | 15.0 | 20.0 | 45.0 | 20.0 | 17.173 | O | 136 |
| A5115 | 10.0 | 25.0 | 45.0 | 20.0 | 15.669 | O | 136 |
| A5116 | 9.0 | 26.0 | 45.0 | 20.0 | 15.368 | O | 136 |

[Table 316]

| A5117 | 8.0 | 27.0 | 45.0 | 20.0 | 15.068 | O | 136 |
|---|---|---|---|---|---|---|---|
| A5118 | 7.0 | 28.0 | 45.0 | 20.0 | 14.767 | O | 136 |
| A5119 | 6.0 | 29.0 | 45.0 | 20.0 | 14.466 | O | 136 |
| A5120 | 5.0 | 30.0 | 45.0 | 20.0 | 14.165 | O | 136 |
| A5121 | 4.0 | 31.0 | 45.0 | 20.0 | 13.845 | O | 136 |
| A5122 | 3.0 | 32.0 | 45.0 | 20.0 | 13.491 | O | 136 |
| A5123 | 2.0 | 33.0 | 45.0 | 20.0 | 13.136 | O | 136 |
| A5124 | 1.0 | 34.0 | 45.0 | 20.0 | 12.781 | O | 136 |
| A5125 | 0.0 | 35.0 | 45.0 | 20.0 | 12.427 | O | 136 |
| A5126 | 22.0 | 8.0 | 50.0 | 20.0 | 19.029 | X | 136 |
| A5127 | 21.9 | 8.1 | 50.0 | 20.0 | 18.999 | O | 136 |
| A5128 | 21.0 | 9.0 | 50.0 | 20.0 | 18.728 | O | 136 |
| A5129 | 15.0 | 15.0 | 50.0 | 20.0 | 16.923 | O | 136 |
| A5130 | 10.0 | 20.0 | 50.0 | 20.0 | 15.419 | O | 136 |
| A5131 | 9.0 | 21.0 | 50.0 | 20.0 | 15.118 | O | 136 |
| A5132 | 8.0 | 22.0 | 50.0 | 20.0 | 14.818 | O | 136 |
| A5133 | 7.0 | 23.0 | 50.0 | 20.0 | 14.517 | O | 136 |
| A5134 | 6.0 | 24.0 | 50.0 | 20.0 | 14.216 | O | 136 |
| A5135 | 5.0 | 25.0 | 50.0 | 20.0 | 13.915 | O | 136 |
| A5136 | 4.0 | 26.0 | 50.0 | 20.0 | 13.569 | O | 136 |
| A5137 | 3.0 | 27.0 | 50.0 | 20.0 | 13.215 | O | 136 |
| A5138 | 2.0 | 28.0 | 50.0 | 20.0 | 12.860 | O | 136 |
| A5139 | 1.0 | 29.0 | 50.0 | 20.0 | 12.505 | O | 136 |
| A5140 | 0.0 | 30.0 | 50.0 | 20.0 | 12.151 | O | 136 |
| A5141 | 23.0 | 2.0 | 55.0 | 20.0 | 19.080 | X | 136 |
| A5142 | 22.8 | 2.2 | 55.0 | 20.0 | 19.020 | X | 136 |
| A5143 | 22.7 | 2.3 | 55.0 | 20.0 | 18.990 | O | 136 |
| A5144 | 22.0 | 3.0 | 55.0 | 20.0 | 18.779 | O | 136 |
| A5145 | 20.0 | 5.0 | 55.0 | 20.0 | 18.178 | O | 136 |
| A5146 | 15.0 | 10.0 | 55.0 | 20.0 | 16.673 | O | 136 |
| A5147 | 10.0 | 15.0 | 55.0 | 20.0 | 15.169 | O | 136 |
| A5148 | 9.0 | 16.0 | 55.0 | 20.0 | 14.868 | O | 136 |
| A5149 | 8.0 | 17.0 | 55.0 | 20.0 | 14.568 | O | 136 |
| A5150 | 7.0 | 18.0 | 55.0 | 20.0 | 14.267 | O | 136 |
| A5151 | 6.0 | 19.0 | 55.0 | 20.0 | 13.966 | O | 136 |
| A5152 | 5.0 | 20.0 | 55.0 | 20.0 | 13.648 | O | 136 |
| A5153 | 4.0 | 21.0 | 55.0 | 20.0 | 13.293 | O | 136 |
| A5154 | 3.0 | 22.0 | 55.0 | 20.0 | 12.939 | O | 136 |
| A5155 | 2.0 | 23.0 | 55.0 | 20.0 | 12.584 | O | 136 |
| A5156 | 1.0 | 24.0 | 55.0 | 20.0 | 12.229 | O | 136 |
| A5157 | 0.0 | 25.0 | 55.0 | 20.0 | 11.875 | O | 136 |
| A5158 | 15.0 | 58.0 | 5.0 | 22.0 | 19.039 | X | 150 |
| A5159 | 14.9 | 58.1 | 5.0 | 22.0 | 19.009 | X | 150 |
| A5160 | 14.8 | 58.2 | 5.0 | 22.0 | 18.979 | O | 150 |
| A5161 | 14.0 | 59.0 | 5.0 | 22.0 | 18.738 | O | 150 |
| A5162 | 10.0 | 63.0 | 5.0 | 22.0 | 17.535 | O | 150 |
| A5163 | 9.0 | 64.0 | 5.0 | 22.0 | 17.234 | O | 150 |
| A5164 | 8.0 | 65.0 | 5.0 | 22.0 | 16.933 | O | 150 |
| A5165 | 7.0 | 66.0 | 5.0 | 22.0 | 16.632 | O | 150 |
| A5166 | 6.0 | 67.0 | 5.0 | 22.0 | 16.331 | O | 150 |

[Table 317]

| A5167 | 5.0 | 68.0 | 5.0 | 22.0 | 16.031 | O | 150 |
|---|---|---|---|---|---|---|---|
| A5168 | 4.0 | 69.0 | 5.0 | 22.0 | 15.730 | O | 150 |
| A5169 | 3.0 | 70.0 | 5.0 | 22.0 | 15.429 | O | 150 |
| A5170 | 2.0 | 71.0 | 5.0 | 22.0 | 15.128 | O | 150 |
| A5171 | 1.0 | 72.0 | 5.0 | 22.0 | 14.827 | O | 150 |
| A5172 | 0.0 | 73.0 | 5.0 | 22.0 | 14.500 | O | 150 |
| A5173 | 16.0 | 52.0 | 10.0 | 22.0 | 19.090 | X | 150 |
| A5174 | 15.8 | 52.2 | 10.0 | 22.0 | 19.030 | X | 150 |
| A5175 | 15.7 | 52.3 | 10.0 | 22.0 | 18.999 | O | 150 |
| A5176 | 15.0 | 53.0 | 10.0 | 22.0 | 18.789 | O | 150 |
| A5177 | 10.0 | 58.0 | 10.0 | 22.0 | 17.285 | O | 150 |
| A5178 | 9.0 | 59.0 | 10.0 | 22.0 | 16.984 | O | 150 |
| A5179 | 8.0 | 60.0 | 10.0 | 22.0 | 16.683 | O | 150 |
| A5180 | 7.0 | 61.0 | 10.0 | 22.0 | 16.382 | O | 150 |
| A5181 | 6.0 | 62.0 | 10.0 | 22.0 | 16.081 | O | 150 |
| A5182 | 5.0 | 63.0 | 10.0 | 22.0 | 15.781 | O | 150 |
| A5183 | 4.0 | 64.0 | 10.0 | 22.0 | 15.480 | O | 150 |
| A5184 | 3.0 | 65.0 | 10.0 | 22.0 | 15.179 | O | 150 |
| A5185 | 2.0 | 66.0 | 10.0 | 22.0 | 14.878 | O | 150 |
| A5186 | 1.0 | 67.0 | 10.0 | 22.0 | 14.577 | O | 150 |
| A5187 | 0.0 | 68.0 | 10.0 | 22.0 | 14.224 | O | 150 |
| A5188 | 17.0 | 46.0 | 15.0 | 22.0 | 19.141 | X | 150 |
| A5189 | 16.6 | 46.4 | 15.0 | 22.0 | 19.020 | X | 150 |
| A5190 | 16.5 | 46.5 | 15.0 | 22.0 | 18.990 | O | 150 |
| A5191 | 16.0 | 47.0 | 15.0 | 22.0 | 18.840 | O | 150 |
| A5192 | 15.0 | 48.0 | 15.0 | 22.0 | 18.539 | O | 150 |
| A5193 | 10.0 | 53.0 | 15.0 | 22.0 | 17.035 | O | 150 |
| A5194 | 9.0 | 54.0 | 15.0 | 22.0 | 16.734 | O | 150 |
| A5195 | 8.0 | 55.0 | 15.0 | 22.0 | 16.433 | O | 150 |
| A5196 | 7.0 | 56.0 | 15.0 | 22.0 | 16.132 | O | 150 |
| A5197 | 6.0 | 57.0 | 15.0 | 22.0 | 15.831 | O | 150 |
| A5198 | 5.0 | 58.0 | 15.0 | 22.0 | 15.531 | O | 150 |
| A5199 | 4.0 | 59.0 | 15.0 | 22.0 | 15.230 | O | 150 |
| A5200 | 3.0 | 60.0 | 15.0 | 22.0 | 14.929 | O | 150 |
| A5201 | 2.0 | 61.0 | 15.0 | 22.0 | 14.628 | O | 150 |
| A5202 | 1.0 | 62.0 | 15.0 | 22.0 | 14.303 | O | 150 |
| A5203 | 0.0 | 63.0 | 15.0 | 22.0 | 13.948 | O | 150 |
| A5204 | 18.0 | 40.0 | 20.0 | 22.0 | 19.192 | X | 150 |
| A5205 | 17.4 | 40.6 | 20.0 | 22.0 | 19.011 | X | 150 |
| A5206 | 17.3 | 40.7 | 20.0 | 22.0 | 18.981 | O | 150 |
| A5207 | 17.0 | 41.0 | 20.0 | 22.0 | 18.891 | O | 150 |
| A5208 | 15.0 | 43.0 | 20.0 | 22.0 | 18.289 | O | 150 |
| A5209 | 10.0 | 48.0 | 20.0 | 22.0 | 16.785 | O | 150 |
| A5210 | 9.0 | 49.0 | 20.0 | 22.0 | 16.484 | O | 150 |
| A5211 | 8.0 | 50.0 | 20.0 | 22.0 | 16.183 | O | 150 |
| A5212 | 7.0 | 51.0 | 20.0 | 22.0 | 15.882 | O | 150 |
| A5213 | 6.0 | 52.0 | 20.0 | 22.0 | 15.582 | O | 150 |
| A5214 | 5.0 | 53.0 | 20.0 | 22.0 | 15.281 | O | 150 |
| A5215 | 4.0 | 54.0 | 20.0 | 22.0 | 14.980 | O | 150 |
| A5216 | 3.0 | 55.0 | 20.0 | 22.0 | 14.679 | O | 150 |

[Table 318]

| A5217 | 2.0 | 56.0 | 20.0 | 22.0 | 14.378 | O | 150 |
|---|---|---|---|---|---|---|---|
| A5218 | 1.0 | 57.0 | 20.0 | 22.0 | 14.027 | O | 150 |
| A5219 | 0.0 | 58.0 | 20.0 | 22.0 | 13.672 | O | 150 |
| A5220 | 19.0 | 34.0 | 25.0 | 22.0 | 19.242 | X | 150 |
| A5221 | 18.2 | 34.8 | 25.0 | 22.0 | 19.002 | X | 150 |
| A5222 | 18.1 | 34.9 | 25.0 | 22.0 | 18.972 | O | 150 |
| A5223 | 18.0 | 35.0 | 25.0 | 22.0 | 18.942 | O | 150 |
| A5224 | 15.0 | 38.0 | 25.0 | 22.0 | 18.039 | O | 150 |
| A5225 | 10.0 | 43.0 | 25.0 | 22.0 | 16.535 | O | 150 |
| A5226 | 9.0 | 44.0 | 25.0 | 22.0 | 16.234 | O | 150 |
| A5227 | 8.0 | 45.0 | 25.0 | 22.0 | 15.933 | O | 150 |
| A5228 | 7.0 | 46.0 | 25.0 | 22.0 | 15.632 | O | 150 |
| A5229 | 6.0 | 47.0 | 25.0 | 22.0 | 15.332 | O | 150 |
| A5230 | 5.0 | 48.0 | 25.0 | 22.0 | 15.031 | O | 150 |
| A5231 | 4.0 | 49.0 | 25.0 | 22.0 | 14.730 | O | 150 |
| A5232 | 3.0 | 50.0 | 25.0 | 22.0 | 14.429 | O | 150 |
| A5233 | 2.0 | 51.0 | 25.0 | 22.0 | 14.106 | O | 150 |
| A5234 | 1.0 | 52.0 | 25.0 | 22.0 | 13.751 | O | 150 |
| A5235 | 0.0 | 53.0 | 25.0 | 22.0 | 13.396 | O | 150 |
| A5236 | 20.0 | 28.0 | 30.0 | 22.0 | 19.293 | X | 150 |
| A5237 | 19.1 | 28.9 | 30.0 | 22.0 | 19.023 | X | 150 |
| A5238 | 19.0 | 29.0 | 30.0 | 22.0 | 18.992 | O | 150 |
| A5239 | 15.0 | 33.0 | 30.0 | 22.0 | 17.789 | O | 150 |
| A5240 | 10.0 | 38.0 | 30.0 | 22.0 | 16.285 | O | 150 |
| A5241 | 9.0 | 39.0 | 30.0 | 22.0 | 15.984 | O | 150 |
| A5242 | 8.0 | 40.0 | 30.0 | 22.0 | 15.683 | O | 150 |
| A5243 | 7.0 | 41.0 | 30.0 | 22.0 | 15.382 | O | 150 |
| A5244 | 6.0 | 42.0 | 30.0 | 22.0 | 15.082 | O | 150 |
| A5245 | 5.0 | 43.0 | 30.0 | 22.0 | 14.781 | O | 150 |
| A5246 | 4.0 | 44.0 | 30.0 | 22.0 | 14.480 | O | 150 |
| A5247 | 3.0 | 45.0 | 30.0 | 22.0 | 14.179 | O | 150 |
| A5248 | 2.0 | 46.0 | 30.0 | 22.0 | 13.830 | O | 150 |
| A5249 | 1.0 | 47.0 | 30.0 | 22.0 | 13.475 | O | 150 |
| A5250 | 0.0 | 48.0 | 30.0 | 22.0 | 13.120 | O | 150 |
| A5251 | 20.0 | 23.0 | 35.0 | 22.0 | 19.043 | X | 150 |
| A5252 | 19.9 | 23.1 | 35.0 | 22.0 | 19.013 | X | 150 |
| A5253 | 19.8 | 23.2 | 35.0 | 22.0 | 18.983 | O | 150 |
| A5254 | 19.0 | 24.0 | 35.0 | 22.0 | 18.743 | O | 150 |
| A5255 | 15.0 | 28.0 | 35.0 | 22.0 | 17.539 | O | 150 |
| A5256 | 10.0 | 33.0 | 35.0 | 22.0 | 16.035 | O | 150 |
| A5257 | 9.0 | 34.0 | 35.0 | 22.0 | 15.734 | O | 150 |
| A5258 | 8.0 | 35.0 | 35.0 | 22.0 | 15.433 | O | 150 |
| A5259 | 7.0 | 36.0 | 35.0 | 22.0 | 15.133 | O | 150 |
| A5260 | 6.0 | 37.0 | 35.0 | 22.0 | 14.832 | O | 150 |
| A5261 | 5.0 | 38.0 | 35.0 | 22.0 | 14.531 | O | 150 |
| A5262 | 4.0 | 39.0 | 35.0 | 22.0 | 14.230 | O | 150 |
| A5263 | 3.0 | 40.0 | 35.0 | 22.0 | 13.909 | O | 150 |
| A5264 | 2.0 | 41.0 | 35.0 | 22.0 | 13.554 | O | 150 |
| A5265 | 1.0 | 42.0 | 35.0 | 22.0 | 13.199 | O | 150 |
| A5266 | 0.0 | 43.0 | 35.0 | 22.0 | 12.844 | O | 150 |

[Table 319]

| A5267 | 21.0 | 17.0 | 40.0 | 22.0 | 19.094 | X | 150 |
|---|---|---|---|---|---|---|---|
| A5268 | 20.7 | 17.3 | 40.0 | 22.0 | 19.004 | X | 150 |
| A5269 | 20.6 | 17.4 | 40.0 | 22.0 | 18.974 | O | 150 |
| A5270 | 20.0 | 18.0 | 40.0 | 22.0 | 18.793 | O | 150 |
| A5271 | 15.0 | 23.0 | 40.0 | 22.0 | 17.289 | O | 150 |
| A5272 | 10.0 | 28.0 | 40.0 | 22.0 | 15.785 | O | 150 |
| A5273 | 9.0 | 29.0 | 40.0 | 22.0 | 15.484 | O | 150 |
| A5274 | 8.0 | 30.0 | 40.0 | 22.0 | 15.183 | O | 150 |
| A5275 | 7.0 | 31.0 | 40.0 | 22.0 | 14.883 | O | 150 |
| A5276 | 6.0 | 32.0 | 40.0 | 22.0 | 14.582 | O | 150 |
| A5277 | 5.0 | 33.0 | 40.0 | 22.0 | 14.281 | O | 150 |
| A5278 | 4.0 | 34.0 | 40.0 | 22.0 | 13.980 | O | 150 |
| A5279 | 3.0 | 35.0 | 40.0 | 22.0 | 13.633 | O | 150 |
| A5280 | 2.0 | 36.0 | 40.0 | 22.0 | 13.278 | O | 150 |
| A5281 | 1.0 | 37.0 | 40.0 | 22.0 | 12.923 | O | 150 |
| A5282 | 0.0 | 38.0 | 40.0 | 22.0 | 12.569 | O | 150 |
| A5283 | 22.0 | 11.0 | 45.0 | 22.0 | 19.145 | X | 150 |
| A5284 | 21.6 | 11.4 | 45.0 | 22.0 | 19.025 | X | 150 |
| A5285 | 21.5 | 11.5 | 45.0 | 22.0 | 18.995 | O | 150 |
| A5286 | 21.0 | 12.0 | 45.0 | 22.0 | 18.844 | O | 150 |
| A5287 | 20.0 | 13.0 | 45.0 | 22.0 | 18.543 | O | 150 |
| A5288 | 15.0 | 18.0 | 45.0 | 22.0 | 17.039 | O | 150 |
| A5289 | 10.0 | 23.0 | 45.0 | 22.0 | 15.535 | O | 150 |
| A5290 | 9.0 | 24.0 | 45.0 | 22.0 | 15.234 | O | 150 |
| A5291 | 8.0 | 25.0 | 45.0 | 22.0 | 14.933 | O | 150 |
| A5292 | 7.0 | 26.0 | 45.0 | 22.0 | 14.633 | O | 150 |
| A5293 | 6.0 | 27.0 | 45.0 | 22.0 | 14.332 | O | 150 |
| A5294 | 5.0 | 28.0 | 45.0 | 22.0 | 14.031 | O | 150 |
| A5295 | 4.0 | 29.0 | 45.0 | 22.0 | 13.711 | O | 150 |
| A5296 | 3.0 | 30.0 | 45.0 | 22.0 | 13.357 | O | 150 |
| A5297 | 2.0 | 31.0 | 45.0 | 22.0 | 13.002 | O | 150 |
| A5298 | 1.0 | 32.0 | 45.0 | 22.0 | 12.647 | O | 150 |
| A5299 | 0.0 | 33.0 | 45.0 | 22.0 | 12.293 | O | 150 |
| A5300 | 23.0 | 5.0 | 50.0 | 22.0 | 19.196 | X | 150 |
| A5301 | 22.4 | 5.6 | 50.0 | 22.0 | 19.015 | X | 150 |
| A5302 | 22.3 | 5.7 | 50.0 | 22.0 | 18.985 | O | 150 |
| A5303 | 22.0 | 6.0 | 50.0 | 22.0 | 18.895 | O | 150 |
| A5304 | 20.0 | 8.0 | 50.0 | 22.0 | 18.294 | O | 150 |
| A5305 | 15.0 | 13.0 | 50.0 | 22.0 | 16.789 | O | 150 |
| A5306 | 10.0 | 18.0 | 50.0 | 22.0 | 15.285 | O | 150 |
| A5307 | 9.0 | 19.0 | 50.0 | 22.0 | 14.984 | O | 150 |
| A5308 | 8.0 | 20.0 | 50.0 | 22.0 | 14.684 | O | 150 |
| A5309 | 7.0 | 21.0 | 50.0 | 22.0 | 14.383 | O | 150 |
| A5310 | 6.0 | 22.0 | 50.0 | 22.0 | 14.082 | O | 150 |
| A5311 | 5.0 | 23.0 | 50.0 | 22.0 | 13.781 | O | 150 |
| A5312 | 4.0 | 24.0 | 50.0 | 22.0 | 13.435 | O | 150 |
| A5313 | 3.0 | 25.0 | 50.0 | 22.0 | 13.081 | O | 150 |
| A5314 | 2.0 | 26.0 | 50.0 | 22.0 | 12.726 | O | 150 |
| A5315 | 1.0 | 27.0 | 50.0 | 22.0 | 12.371 | O | 150 |
| A5316 | 0.0 | 28.0 | 50.0 | 22.0 | 12.017 | O | 150 |

[Table 320]

| A5317 | 24.0 | -1.0 | 55.0 | 22.0 | 19.247 | X | 150 |
|-------|------|------|------|------|--------|---|-----|
| A5318 | 23.2 | -0.2 | 55.0 | 22.0 | 19.006 | X | 150 |
| A5319 | 23.1 | -0.1 | 55.0 | 22.0 | 18.976 | O | 150 |
| A5320 | 23.0 | 0.0 | 55.0 | 22.0 | 18.946 | O | 150 |
| A5321 | 20.0 | 3.0 | 55.0 | 22.0 | 18.044 | O | 150 |
| A5322 | 15.0 | 8.0 | 55.0 | 22.0 | 16.539 | O | 150 |
| A5323 | 10.0 | 13.0 | 55.0 | 22.0 | 15.035 | O | 150 |
| A5324 | 9.0 | 14.0 | 55.0 | 22.0 | 14.734 | O | 150 |
| A5325 | 8.0 | 15.0 | 55.0 | 22.0 | 14.434 | O | 150 |
| A5326 | 7.0 | 16.0 | 55.0 | 22.0 | 14.133 | O | 150 |
| A5327 | 6.0 | 17.0 | 55.0 | 22.0 | 13.832 | O | 150 |
| A5328 | 5.0 | 18.0 | 55.0 | 22.0 | 13.514 | O | 150 |
| A5329 | 4.0 | 19.0 | 55.0 | 22.0 | 13.159 | O | 150 |
| A5330 | 3.0 | 20.0 | 55.0 | 22.0 | 12.805 | O | 150 |
| A5331 | 2.0 | 21.0 | 55.0 | 22.0 | 12.450 | O | 150 |
| A5332 | 1.0 | 22.0 | 55.0 | 22.0 | 12.095 | O | 150 |
| A5333 | 0.0 | 23.0 | 55.0 | 22.0 | 11.741 | O | 150 |

Tables 321 to 342 show the composition, combustion heat amount, and GWP of the working medium of a four-component system of propane, HFO-1132(E), HFO-1234yf, and $CO_2$.

[Table 321]

| Case | propane | HFO-1132(E) | HFO-1234yf | $CO_2$ | Heat of Combustion | Evaluation | GWP |
|---|---|---|---|---|---|---|---|
| A5334 | 12.0 | 81.0 | 5.0 | 2.0 | 19.286 | X | 1 |
| A5335 | 11.1 | 81.9 | 5.0 | 2.0 | 19.015 | X | 1 |
| A5336 | 11.0 | 82.0 | 5.0 | 2.0 | 18.985 | O | 1 |
| A5337 | 10.0 | 83.0 | 5.0 | 2.0 | 18.684 | O | 1 |
| A5338 | 9.0 | 84.0 | 5.0 | 2.0 | 18.384 | O | 1 |
| A5339 | 8.0 | 85.0 | 5.0 | 2.0 | 18.083 | O | 1 |
| A5340 | 7.0 | 86.0 | 5.0 | 2.0 | 17.782 | O | 1 |
| A5341 | 6.0 | 87.0 | 5.0 | 2.0 | 17.481 | O | 1 |
| A5342 | 5.0 | 88.0 | 5.0 | 2.0 | 17.180 | O | 1 |
| A5343 | 4.0 | 89.0 | 5.0 | 2.0 | 16.879 | O | 1 |
| A5344 | 3.0 | 90.0 | 5.0 | 2.0 | 16.579 | O | 1 |
| A5345 | 2.0 | 91.0 | 5.0 | 2.0 | 16.278 | O | 1 |
| A5346 | 1.0 | 92.0 | 5.0 | 2.0 | 15.977 | O | 1 |
| A5347 | 0.0 | 93.0 | 5.0 | 2.0 | 15.650 | O | 1 |
| A5348 | 12.0 | 76.0 | 10.0 | 2.0 | 19.036 | X | 1 |
| A5349 | 11.9 | 76.1 | 10.0 | 2.0 | 19.006 | X | 1 |
| A5350 | 11.8 | 76.2 | 10.0 | 2.0 | 18.976 | O | 1 |
| A5351 | 11.0 | 77.0 | 10.0 | 2.0 | 18.735 | O | 1 |
| A5352 | 10.0 | 78.0 | 10.0 | 2.0 | 18.434 | O | 1 |
| A5353 | 9.0 | 79.0 | 10.0 | 2.0 | 18.134 | O | 1 |
| A5354 | 8.0 | 80.0 | 10.0 | 2.0 | 17.833 | O | 1 |
| A5355 | 7.0 | 81.0 | 10.0 | 2.0 | 17.532 | O | 1 |
| A5356 | 6.0 | 82.0 | 10.0 | 2.0 | 17.231 | O | 1 |
| A5357 | 5.0 | 83.0 | 10.0 | 2.0 | 16.930 | O | 1 |
| A5358 | 4.0 | 84.0 | 10.0 | 2.0 | 16.630 | O | 1 |
| A5359 | 3.0 | 85.0 | 10.0 | 2.0 | 16.329 | O | 1 |
| A5360 | 2.0 | 86.0 | 10.0 | 2.0 | 16.028 | O | 1 |
| A5361 | 1.0 | 87.0 | 10.0 | 2.0 | 15.727 | O | 1 |
| A5362 | 0.0 | 88.0 | 10.0 | 2.0 | 15.374 | O | 1 |
| A5363 | 13.0 | 70.0 | 15.0 | 2.0 | 19.087 | X | 1 |
| A5364 | 12.8 | 70.2 | 15.0 | 2.0 | 19.027 | X | 1 |
| A5365 | 12.7 | 70.3 | 15.0 | 2.0 | 18.997 | O | 1 |
| A5366 | 12.0 | 71.0 | 15.0 | 2.0 | 18.786 | O | 1 |
| A5367 | 10.0 | 73.0 | 15.0 | 2.0 | 18.185 | O | 1 |
| A5368 | 9.0 | 74.0 | 15.0 | 2.0 | 17.884 | O | 1 |
| A5369 | 8.0 | 75.0 | 15.0 | 2.0 | 17.583 | O | 1 |
| A5370 | 7.0 | 76.0 | 15.0 | 2.0 | 17.282 | O | 1 |
| A5371 | 6.0 | 77.0 | 15.0 | 2.0 | 16.981 | O | 1 |
| A5372 | 5.0 | 78.0 | 15.0 | 2.0 | 16.680 | O | 1 |
| A5373 | 4.0 | 79.0 | 15.0 | 2.0 | 16.380 | O | 1 |
| A5374 | 3.0 | 80.0 | 15.0 | 2.0 | 16.079 | O | 1 |
| A5375 | 2.0 | 81.0 | 15.0 | 2.0 | 15.778 | O | 1 |
| A5376 | 1.0 | 82.0 | 15.0 | 2.0 | 15.453 | O | 1 |
| A5377 | 0.0 | 83.0 | 15.0 | 2.0 | 15.098 | O | 1 |
| A5378 | 14.0 | 64.0 | 20.0 | 2.0 | 19.138 | X | 1 |
| A5379 | 13.6 | 64.4 | 20.0 | 2.0 | 19.018 | X | 1 |
| A5380 | 13.5 | 64.5 | 20.0 | 2.0 | 18.988 | O | 1 |
| A5381 | 13.0 | 65.0 | 20.0 | 2.0 | 18.837 | O | 1 |
| A5382 | 10.0 | 68.0 | 20.0 | 2.0 | 17.935 | O | 1 |
| A5383 | 9.0 | 69.0 | 20.0 | 2.0 | 17.634 | O | 1 |

[Table 322]

| A5384 | 8.0 | 70.0 | 20.0 | 2.0 | 17.333 | O | 1 |
|---|---|---|---|---|---|---|---|
| A5385 | 7.0 | 71.0 | 20.0 | 2.0 | 17.032 | O | 1 |
| A5386 | 6.0 | 72.0 | 20.0 | 2.0 | 16.731 | O | 1 |
| A5387 | 5.0 | 73.0 | 20.0 | 2.0 | 16.430 | O | 1 |
| A5388 | 4.0 | 74.0 | 20.0 | 2.0 | 16.130 | O | 1 |
| A5389 | 3.0 | 75.0 | 20.0 | 2.0 | 15.829 | O | 1 |
| A5390 | 2.0 | 76.0 | 20.0 | 2.0 | 15.528 | O | 1 |
| A5391 | 1.0 | 77.0 | 20.0 | 2.0 | 15.177 | O | 1 |
| A5392 | 0.0 | 78.0 | 20.0 | 2.0 | 14.822 | O | 1 |
| A5393 | 15.0 | 58.0 | 25.0 | 2.0 | 19.189 | X | 1 |
| A5394 | 14.4 | 58.6 | 25.0 | 2.0 | 19.008 | X | 1 |
| A5395 | 14.3 | 58.7 | 25.0 | 2.0 | 18.978 | O | 1 |
| A5396 | 14.0 | 59.0 | 25.0 | 2.0 | 18.888 | O | 1 |
| A5397 | 10.0 | 63.0 | 25.0 | 2.0 | 17.685 | O | 1 |
| A5398 | 9.0 | 64.0 | 25.0 | 2.0 | 17.384 | O | 1 |
| A5399 | 8.0 | 65.0 | 25.0 | 2.0 | 17.083 | O | 1 |
| A5400 | 7.0 | 66.0 | 25.0 | 2.0 | 16.782 | O | 1 |
| A5401 | 6.0 | 67.0 | 25.0 | 2.0 | 16.481 | O | 1 |
| A5402 | 5.0 | 68.0 | 25.0 | 2.0 | 16.180 | O | 1 |
| A5403 | 4.0 | 69.0 | 25.0 | 2.0 | 15.880 | O | 1 |
| A5404 | 3.0 | 70.0 | 25.0 | 2.0 | 15.579 | O | 1 |
| A5405 | 2.0 | 71.0 | 25.0 | 2.0 | 15.256 | O | 1 |
| A5406 | 1.0 | 72.0 | 25.0 | 2.0 | 14.901 | O | 1 |
| A5407 | 0.0 | 73.0 | 25.0 | 2.0 | 14.546 | O | 1 |
| A5408 | 16.0 | 52.0 | 30.0 | 2.0 | 19.240 | X | 1 |
| A5409 | 15.3 | 52.7 | 30.0 | 2.0 | 19.029 | X | 1 |
| A5410 | 15.2 | 52.8 | 30.0 | 2.0 | 18.999 | O | 1 |
| A5411 | 15.0 | 53.0 | 30.0 | 2.0 | 18.939 | O | 1 |
| A5412 | 10.0 | 58.0 | 30.0 | 2.0 | 17.435 | O | 1 |
| A5413 | 9.0 | 59.0 | 30.0 | 2.0 | 17.134 | O | 1 |
| A5414 | 8.0 | 60.0 | 30.0 | 2.0 | 16.833 | O | 1 |
| A5415 | 7.0 | 61.0 | 30.0 | 2.0 | 16.532 | O | 1 |
| A5416 | 6.0 | 62.0 | 30.0 | 2.0 | 16.231 | O | 1 |
| A5417 | 5.0 | 63.0 | 30.0 | 2.0 | 15.931 | O | 1 |
| A5418 | 4.0 | 64.0 | 30.0 | 2.0 | 15.630 | O | 1 |
| A5419 | 3.0 | 65.0 | 30.0 | 2.0 | 15.329 | O | 1 |
| A5420 | 2.0 | 66.0 | 30.0 | 2.0 | 14.980 | O | 1 |
| A5421 | 1.0 | 67.0 | 30.0 | 2.0 | 14.625 | O | 1 |
| A5422 | 0.0 | 68.0 | 30.0 | 2.0 | 14.270 | O | 1 |
| A5423 | 17.0 | 46.0 | 35.0 | 2.0 | 19.291 | X | 1 |
| A5424 | 16.1 | 46.9 | 35.0 | 2.0 | 19.020 | X | 1 |
| A5425 | 16.0 | 47.0 | 35.0 | 2.0 | 18.990 | O | 1 |
| A5426 | 15.0 | 48.0 | 35.0 | 2.0 | 18.689 | O | 1 |
| A5427 | 10.0 | 53.0 | 35.0 | 2.0 | 17.185 | O | 1 |
| A5428 | 9.0 | 54.0 | 35.0 | 2.0 | 16.884 | O | 1 |
| A5429 | 8.0 | 55.0 | 35.0 | 2.0 | 16.583 | O | 1 |
| A5430 | 7.0 | 56.0 | 35.0 | 2.0 | 16.282 | O | 1 |
| A5431 | 6.0 | 57.0 | 35.0 | 2.0 | 15.981 | O | 1 |
| A5432 | 5.0 | 58.0 | 35.0 | 2.0 | 15.681 | O | 1 |
| A5433 | 4.0 | 59.0 | 35.0 | 2.0 | 15.380 | O | 1 |

[Table 323]

| A5434 | 3.0 | 60.0 | 35.0 | 2.0 | 15.058 | O | 1 |
|---|---|---|---|---|---|---|---|
| A5435 | 2.0 | 61.0 | 35.0 | 2.0 | 14.704 | O | 1 |
| A5436 | 1.0 | 62.0 | 35.0 | 2.0 | 14.349 | O | 1 |
| A5437 | 0.0 | 63.0 | 35.0 | 2.0 | 13.994 | O | 1 |
| A5438 | 17.0 | 41.0 | 40.0 | 2.0 | 19.041 | X | 1 |
| A5439 | 16.9 | 41.1 | 40.0 | 2.0 | 19.011 | X | 1 |
| A5440 | 16.8 | 41.2 | 40.0 | 2.0 | 18.980 | O | 1 |
| A5441 | 16.0 | 42.0 | 40.0 | 2.0 | 18.740 | O | 1 |
| A5442 | 15.0 | 43.0 | 40.0 | 2.0 | 18.439 | O | 1 |
| A5443 | 10.0 | 48.0 | 40.0 | 2.0 | 16.935 | O | 1 |
| A5444 | 9.0 | 49.0 | 40.0 | 2.0 | 16.634 | O | 1 |
| A5445 | 8.0 | 50.0 | 40.0 | 2.0 | 16.333 | O | 1 |
| A5446 | 7.0 | 51.0 | 40.0 | 2.0 | 16.032 | O | 1 |
| A5447 | 6.0 | 52.0 | 40.0 | 2.0 | 15.731 | O | 1 |
| A5448 | 5.0 | 53.0 | 40.0 | 2.0 | 15.431 | O | 1 |
| A5449 | 4.0 | 54.0 | 40.0 | 2.0 | 15.130 | O | 1 |
| A5450 | 3.0 | 55.0 | 40.0 | 2.0 | 14.782 | O | 1 |
| A5451 | 2.0 | 56.0 | 40.0 | 2.0 | 14.428 | O | 1 |
| A5452 | 1.0 | 57.0 | 40.0 | 2.0 | 14.073 | O | 1 |
| A5453 | 0.0 | 58.0 | 40.0 | 2.0 | 13.718 | O | 1 |
| A5454 | 18.0 | 35.0 | 45.0 | 2.0 | 19.092 | X | 1 |
| A5455 | 17.7 | 35.3 | 45.0 | 2.0 | 19.001 | X | 1 |
| A5456 | 17.6 | 35.4 | 45.0 | 2.0 | 18.971 | O | 1 |
| A5457 | 17.0 | 36.0 | 45.0 | 2.0 | 18.791 | O | 1 |
| A5458 | 15.0 | 38.0 | 45.0 | 2.0 | 18.189 | O | 1 |
| A5459 | 10.0 | 43.0 | 45.0 | 2.0 | 16.685 | O | 1 |
| A5460 | 9.0 | 44.0 | 45.0 | 2.0 | 16.384 | O | 1 |
| A5461 | 8.0 | 45.0 | 45.0 | 2.0 | 16.083 | O | 1 |
| A5462 | 7.0 | 46.0 | 45.0 | 2.0 | 15.782 | O | 1 |
| A5463 | 6.0 | 47.0 | 45.0 | 2.0 | 15.482 | O | 1 |
| A5464 | 5.0 | 48.0 | 45.0 | 2.0 | 15.181 | O | 1 |
| A5465 | 4.0 | 49.0 | 45.0 | 2.0 | 14.861 | O | 1 |
| A5466 | 3.0 | 50.0 | 45.0 | 2.0 | 14.506 | O | 1 |
| A5467 | 2.0 | 51.0 | 45.0 | 2.0 | 14.152 | O | 1 |
| A5468 | 1.0 | 52.0 | 45.0 | 2.0 | 13.797 | O | 1 |
| A5469 | 0.0 | 53.0 | 45.0 | 2.0 | 13.442 | O | 1 |
| A5470 | 19.0 | 29.0 | 50.0 | 2.0 | 19.142 | X | 1 |
| A5471 | 18.6 | 29.4 | 50.0 | 2.0 | 19.022 | X | 1 |
| A5472 | 18.5 | 29.5 | 50.0 | 2.0 | 18.992 | O | 1 |
| A5473 | 18.0 | 30.0 | 50.0 | 2.0 | 18.842 | O | 1 |
| A5474 | 15.0 | 33.0 | 50.0 | 2.0 | 17.939 | O | 1 |
| A5475 | 10.0 | 38.0 | 50.0 | 2.0 | 16.435 | O | 1 |
| A5476 | 9.0 | 39.0 | 50.0 | 2.0 | 16.134 | O | 1 |
| A5477 | 8.0 | 40.0 | 50.0 | 2.0 | 15.833 | O | 1 |
| A5478 | 7.0 | 41.0 | 50.0 | 2.0 | 15.532 | O | 1 |
| A5479 | 6.0 | 42.0 | 50.0 | 2.0 | 15.232 | O | 1 |
| A5480 | 5.0 | 43.0 | 50.0 | 2.0 | 14.931 | O | 1 |
| A5481 | 4.0 | 44.0 | 50.0 | 2.0 | 14.585 | O | 1 |
| A5482 | 3.0 | 45.0 | 50.0 | 2.0 | 14.230 | O | 1 |
| A5483 | 2.0 | 46.0 | 50.0 | 2.0 | 13.876 | O | 1 |

[Table 324]

| | | | | | | | |
|---|---|---|---|---|---|---|---|
| A5484 | 1.0 | 47.0 | 50.0 | 2.0 | 13.521 | O | 1 |
| A5485 | 0.0 | 48.0 | 50.0 | 2.0 | 13.166 | O | 1 |
| A5486 | 20.0 | 23.0 | 55.0 | 2.0 | 19.193 | X | 1 |
| A5487 | 19.4 | 23.6 | 55.0 | 2.0 | 19.013 | X | 1 |
| A5488 | 19.3 | 23.7 | 55.0 | 2.0 | 18.983 | O | 1 |
| A5489 | 19.0 | 24.0 | 55.0 | 2.0 | 18.892 | O | 1 |
| A5490 | 15.0 | 28.0 | 55.0 | 2.0 | 17.689 | O | 1 |
| A5491 | 10.0 | 33.0 | 55.0 | 2.0 | 16.185 | O | 1 |
| A5492 | 9.0 | 34.0 | 55.0 | 2.0 | 15.884 | O | 1 |
| A5493 | 8.0 | 35.0 | 55.0 | 2.0 | 15.583 | O | 1 |
| A5494 | 7.0 | 36.0 | 55.0 | 2.0 | 15.282 | O | 1 |
| A5495 | 6.0 | 37.0 | 55.0 | 2.0 | 14.982 | O | 1 |
| A5496 | 5.0 | 38.0 | 55.0 | 2.0 | 14.664 | O | 1 |
| A5497 | 4.0 | 39.0 | 55.0 | 2.0 | 14.309 | O | 1 |
| A5498 | 3.0 | 40.0 | 55.0 | 2.0 | 13.954 | O | 1 |
| A5499 | 2.0 | 41.0 | 55.0 | 2.0 | 13.600 | O | 1 |
| A5500 | 1.0 | 42.0 | 55.0 | 2.0 | 13.245 | O | 1 |
| A5501 | 0.0 | 43.0 | 55.0 | 2.0 | 12.890 | O | 1 |
| A5502 | 21.0 | 17.0 | 60.0 | 2.0 | 19.244 | X | 1 |
| A5503 | 20.2 | 17.8 | 60.0 | 2.0 | 19.004 | X | 1 |
| A5504 | 20.1 | 17.9 | 60.0 | 2.0 | 18.973 | O | 1 |
| A5505 | 20.0 | 18.0 | 60.0 | 2.0 | 18.943 | O | 1 |
| A5506 | 15.0 | 23.0 | 60.0 | 2.0 | 17.439 | O | 1 |
| A5507 | 10.0 | 28.0 | 60.0 | 2.0 | 15.935 | O | 1 |
| A5508 | 9.0 | 29.0 | 60.0 | 2.0 | 15.634 | O | 1 |
| A5509 | 8.0 | 30.0 | 60.0 | 2.0 | 15.333 | O | 1 |
| A5510 | 7.0 | 31.0 | 60.0 | 2.0 | 15.033 | O | 1 |
| A5511 | 6.0 | 32.0 | 60.0 | 2.0 | 14.732 | O | 1 |
| A5512 | 5.0 | 33.0 | 60.0 | 2.0 | 14.388 | O | 1 |
| A5513 | 4.0 | 34.0 | 60.0 | 2.0 | 14.033 | O | 1 |
| A5514 | 3.0 | 35.0 | 60.0 | 2.0 | 13.678 | O | 1 |
| A5515 | 2.0 | 36.0 | 60.0 | 2.0 | 13.324 | O | 1 |
| A5516 | 1.0 | 37.0 | 60.0 | 2.0 | 12.969 | O | 1 |
| A5517 | 0.0 | 38.0 | 60.0 | 2.0 | 12.614 | O | 1 |
| A5518 | 22.0 | 11.0 | 65.0 | 2.0 | 19.295 | X | 1 |
| A5519 | 21.1 | 11.9 | 65.0 | 2.0 | 19.024 | X | 1 |
| A5520 | 21.0 | 12.0 | 65.0 | 2.0 | 18.994 | O | 1 |
| A5521 | 20.0 | 13.0 | 65.0 | 2.0 | 18.693 | O | 1 |
| A5522 | 15.0 | 18.0 | 65.0 | 2.0 | 17.189 | O | 1 |
| A5523 | 10.0 | 23.0 | 65.0 | 2.0 | 15.685 | O | 1 |
| A5524 | 9.0 | 24.0 | 65.0 | 2.0 | 15.384 | O | 1 |
| A5525 | 8.0 | 25.0 | 65.0 | 2.0 | 15.083 | O | 1 |
| A5526 | 7.0 | 26.0 | 65.0 | 2.0 | 14.783 | O | 1 |
| A5527 | 6.0 | 27.0 | 65.0 | 2.0 | 14.467 | O | 1 |
| A5528 | 5.0 | 28.0 | 65.0 | 2.0 | 14.112 | O | 1 |
| A5529 | 4.0 | 29.0 | 65.0 | 2.0 | 13.757 | O | 1 |
| A5530 | 3.0 | 30.0 | 65.0 | 2.0 | 13.402 | O | 1 |
| A5531 | 2.0 | 31.0 | 65.0 | 2.0 | 13.048 | O | 1 |
| A5532 | 1.0 | 32.0 | 65.0 | 2.0 | 12.693 | O | 1 |
| A5533 | 0.0 | 33.0 | 65.0 | 2.0 | 12.338 | O | 1 |

[Table 325]

| | | | | | | | |
|---|---|---|---|---|---|---|---|
| A5534 | 22.0 | 6.0 | 70.0 | 2.0 | 19.045 | X | 1 |
| A5535 | 21.9 | 6.1 | 70.0 | 2.0 | 19.015 | X | 1 |
| A5536 | 21.8 | 6.2 | 70.0 | 2.0 | 18.985 | O | 1 |
| A5537 | 21.0 | 7.0 | 70.0 | 2.0 | 18.744 | O | 1 |
| A5538 | 20.0 | 8.0 | 70.0 | 2.0 | 18.443 | O | 1 |
| A5539 | 15.0 | 13.0 | 70.0 | 2.0 | 16.939 | O | 1 |
| A5540 | 10.0 | 18.0 | 70.0 | 2.0 | 15.435 | O | 1 |
| A5541 | 9.0 | 19.0 | 70.0 | 2.0 | 15.134 | O | 1 |
| A5542 | 8.0 | 20.0 | 70.0 | 2.0 | 14.833 | O | 1 |
| A5543 | 7.0 | 21.0 | 70.0 | 2.0 | 14.533 | O | 1 |
| A5544 | 6.0 | 22.0 | 70.0 | 2.0 | 14.191 | O | 1 |
| A5545 | 5.0 | 23.0 | 70.0 | 2.0 | 13.836 | O | 1 |
| A5546 | 4.0 | 24.0 | 70.0 | 2.0 | 13.481 | O | 1 |
| A5547 | 3.0 | 25.0 | 70.0 | 2.0 | 13.126 | O | 1 |
| A5548 | 2.0 | 26.0 | 70.0 | 2.0 | 12.772 | O | 1 |
| A5549 | 1.0 | 27.0 | 70.0 | 2.0 | 12.417 | O | 1 |
| A5550 | 0.0 | 28.0 | 70.0 | 2.0 | 12.062 | O | 1 |
| A5551 | 23.0 | 0.0 | 75.0 | 2.0 | 19.096 | X | 1 |
| A5552 | 22.7 | 0.3 | 75.0 | 2.0 | 19.006 | X | 1 |
| A5553 | 22.6 | 0.4 | 75.0 | 2.0 | 18.976 | O | 1 |
| A5554 | 22.0 | 1.0 | 75.0 | 2.0 | 18.795 | O | 1 |
| A5555 | 20.0 | 3.0 | 75.0 | 2.0 | 18.194 | O | 1 |
| A5556 | 15.0 | 8.0 | 75.0 | 2.0 | 16.689 | O | 1 |
| A5557 | 10.0 | 13.0 | 75.0 | 2.0 | 15.185 | O | 1 |
| A5558 | 9.0 | 14.0 | 75.0 | 2.0 | 14.884 | O | 1 |
| A5559 | 8.0 | 15.0 | 75.0 | 2.0 | 14.584 | O | 1 |
| A5560 | 7.0 | 16.0 | 75.0 | 2.0 | 14.269 | O | 1 |
| A5561 | 6.0 | 17.0 | 75.0 | 2.0 | 13.915 | O | 1 |
| A5562 | 5.0 | 18.0 | 75.0 | 2.0 | 13.560 | O | 1 |
| A5563 | 4.0 | 19.0 | 75.0 | 2.0 | 13.205 | O | 1 |
| A5564 | 3.0 | 20.0 | 75.0 | 2.0 | 12.850 | O | 1 |
| A5565 | 2.0 | 21.0 | 75.0 | 2.0 | 12.496 | O | 1 |
| A5566 | 1.0 | 22.0 | 75.0 | 2.0 | 12.141 | O | 1 |
| A5567 | 0.0 | 23.0 | 75.0 | 2.0 | 11.786 | O | 1 |
| A5568 | 13.0 | 78.0 | 5.0 | 4.0 | 19.262 | X | 1 |
| A5569 | 12.2 | 78.8 | 5.0 | 4.0 | 19.021 | X | 1 |
| A5570 | 12.1 | 78.9 | 5.0 | 4.0 | 18.991 | O | 1 |
| A5571 | 12.0 | 79.0 | 5.0 | 4.0 | 18.961 | O | 1 |
| A5572 | 10.0 | 81.0 | 5.0 | 4.0 | 18.359 | O | 1 |
| A5573 | 9.0 | 82.0 | 5.0 | 4.0 | 18.059 | O | 1 |
| A5574 | 8.0 | 83.0 | 5.0 | 4.0 | 17.758 | O | 1 |
| A5575 | 7.0 | 84.0 | 5.0 | 4.0 | 17.457 | O | 1 |
| A5576 | 6.0 | 85.0 | 5.0 | 4.0 | 17.156 | O | 1 |
| A5577 | 5.0 | 86.0 | 5.0 | 4.0 | 16.855 | O | 1 |
| A5578 | 4.0 | 87.0 | 5.0 | 4.0 | 16.554 | O | 1 |
| A5579 | 3.0 | 88.0 | 5.0 | 4.0 | 16.254 | O | 1 |
| A5580 | 2.0 | 89.0 | 5.0 | 4.0 | 15.953 | O | 1 |
| A5581 | 1.0 | 90.0 | 5.0 | 4.0 | 15.652 | O | 1 |
| A5582 | 0.0 | 91.0 | 5.0 | 4.0 | 15.325 | O | 1 |
| A5583 | 13.0 | 73.0 | 10.0 | 4.0 | 19.012 | X | 1 |

[Table 326]

| A5584 | 12.9 | 73.1 | 10.0 | 4.0 | 18.982 | O | 1 |
|---|---|---|---|---|---|---|---|
| A5585 | 12.0 | 74.0 | 10.0 | 4.0 | 18.711 | O | 1 |
| A5586 | 10.0 | 76.0 | 10.0 | 4.0 | 18.109 | O | 1 |
| A5587 | 9.0 | 77.0 | 10.0 | 4.0 | 17.809 | O | 1 |
| A5588 | 8.0 | 78.0 | 10.0 | 4.0 | 17.508 | O | 1 |
| A5589 | 7.0 | 79.0 | 10.0 | 4.0 | 17.207 | O | 1 |
| A5590 | 6.0 | 80.0 | 10.0 | 4.0 | 16.906 | O | 1 |
| A5591 | 5.0 | 81.0 | 10.0 | 4.0 | 16.605 | O | 1 |
| A5592 | 4.0 | 82.0 | 10.0 | 4.0 | 16.304 | O | 1 |
| A5593 | 3.0 | 83.0 | 10.0 | 4.0 | 16.004 | O | 1 |
| A5594 | 2.0 | 84.0 | 10.0 | 4.0 | 15.703 | O | 1 |
| A5595 | 1.0 | 85.0 | 10.0 | 4.0 | 15.402 | O | 1 |
| A5596 | 0.0 | 86.0 | 10.0 | 4.0 | 15.049 | O | 1 |
| A5597 | 14.0 | 67.0 | 15.0 | 4.0 | 19.063 | X | 1 |
| A5598 | 13.8 | 67.2 | 15.0 | 4.0 | 19.003 | X | 1 |
| A5599 | 13.7 | 67.3 | 15.0 | 4.0 | 18.973 | O | 1 |
| A5600 | 13.0 | 68.0 | 15.0 | 4.0 | 18.762 | O | 1 |
| A5601 | 10.0 | 71.0 | 15.0 | 4.0 | 17.860 | O | 1 |
| A5602 | 9.0 | 72.0 | 15.0 | 4.0 | 17.559 | O | 1 |
| A5603 | 8.0 | 73.0 | 15.0 | 4.0 | 17.258 | O | 1 |
| A5604 | 7.0 | 74.0 | 15.0 | 4.0 | 16.957 | O | 1 |
| A5605 | 6.0 | 75.0 | 15.0 | 4.0 | 16.656 | O | 1 |
| A5606 | 5.0 | 76.0 | 15.0 | 4.0 | 16.355 | O | 1 |
| A5607 | 4.0 | 77.0 | 15.0 | 4.0 | 16.055 | O | 1 |
| A5608 | 3.0 | 78.0 | 15.0 | 4.0 | 15.754 | O | 1 |
| A5609 | 2.0 | 79.0 | 15.0 | 4.0 | 15.453 | O | 1 |
| A5610 | 1.0 | 80.0 | 15.0 | 4.0 | 15.128 | O | 1 |
| A5611 | 0.0 | 81.0 | 15.0 | 4.0 | 14.773 | O | 1 |
| A5612 | 15.0 | 61.0 | 20.0 | 4.0 | 19.114 | X | 1 |
| A5613 | 14.7 | 61.3 | 20.0 | 4.0 | 19.023 | X | 1 |
| A5614 | 14.6 | 61.4 | 20.0 | 4.0 | 18.993 | O | 1 |
| A5615 | 14.0 | 62.0 | 20.0 | 4.0 | 18.813 | O | 1 |
| A5616 | 10.0 | 66.0 | 20.0 | 4.0 | 17.610 | O | 1 |
| A5617 | 9.0 | 67.0 | 20.0 | 4.0 | 17.309 | O | 1 |
| A5618 | 8.0 | 68.0 | 20.0 | 4.0 | 17.008 | O | 1 |
| A5619 | 7.0 | 69.0 | 20.0 | 4.0 | 16.707 | O | 1 |
| A5620 | 6.0 | 70.0 | 20.0 | 4.0 | 16.406 | O | 1 |
| A5621 | 5.0 | 71.0 | 20.0 | 4.0 | 16.105 | O | 1 |
| A5622 | 4.0 | 72.0 | 20.0 | 4.0 | 15.805 | O | 1 |
| A5623 | 3.0 | 73.0 | 20.0 | 4.0 | 15.504 | O | 1 |
| A5624 | 2.0 | 74.0 | 20.0 | 4.0 | 15.203 | O | 1 |
| A5625 | 1.0 | 75.0 | 20.0 | 4.0 | 14.852 | O | 1 |
| A5626 | 0.0 | 76.0 | 20.0 | 4.0 | 14.497 | O | 1 |
| A5627 | 16.0 | 55.0 | 25.0 | 4.0 | 19.165 | X | 1 |
| A5628 | 15.5 | 55.5 | 25.0 | 4.0 | 19.014 | X | 1 |
| A5629 | 15.4 | 55.6 | 25.0 | 4.0 | 18.984 | O | 1 |
| A5630 | 15.0 | 56.0 | 25.0 | 4.0 | 18.864 | O | 1 |
| A5631 | 10.0 | 61.0 | 25.0 | 4.0 | 17.360 | O | 1 |
| A5632 | 9.0 | 62.0 | 25.0 | 4.0 | 17.059 | O | 1 |
| A5633 | 8.0 | 63.0 | 25.0 | 4.0 | 16.758 | O | 1 |

[Table 327]

346

| | | | | | | | |
|---|---|---|---|---|---|---|---|
| A5634 | 7.0 | 64.0 | 25.0 | 4.0 | 16.457 | O | 1 |
| A5635 | 6.0 | 65.0 | 25.0 | 4.0 | 16.156 | O | 1 |
| A5636 | 5.0 | 66.0 | 25.0 | 4.0 | 15.855 | O | 1 |
| A5637 | 4.0 | 67.0 | 25.0 | 4.0 | 15.555 | O | 1 |
| A5638 | 3.0 | 68.0 | 25.0 | 4.0 | 15.254 | O | 1 |
| A5639 | 2.0 | 69.0 | 25.0 | 4.0 | 14.931 | O | 1 |
| A5640 | 1.0 | 70.0 | 25.0 | 4.0 | 14.576 | O | 1 |
| A5641 | 0.0 | 71.0 | 25.0 | 4.0 | 14.221 | O | 1 |
| A5642 | 17.0 | 49.0 | 30.0 | 4.0 | 19.215 | X | 1 |
| A5643 | 16.3 | 49.7 | 30.0 | 4.0 | 19.005 | X | 1 |
| A5644 | 16.2 | 49.8 | 30.0 | 4.0 | 18.975 | O | 1 |
| A5645 | 16.0 | 50.0 | 30.0 | 4.0 | 18.915 | O | 1 |
| A5646 | 15.0 | 51.0 | 30.0 | 4.0 | 18.614 | O | 1 |
| A5647 | 10.0 | 56.0 | 30.0 | 4.0 | 17.110 | O | 1 |
| A5648 | 9.0 | 57.0 | 30.0 | 4.0 | 16.809 | O | 1 |
| A5649 | 8.0 | 58.0 | 30.0 | 4.0 | 16.508 | O | 1 |
| A5650 | 7.0 | 59.0 | 30.0 | 4.0 | 16.207 | O | 1 |
| A5651 | 6.0 | 60.0 | 30.0 | 4.0 | 15.906 | O | 1 |
| A5652 | 5.0 | 61.0 | 30.0 | 4.0 | 15.606 | O | 1 |
| A5653 | 4.0 | 62.0 | 30.0 | 4.0 | 15.305 | O | 1 |
| A5654 | 3.0 | 63.0 | 30.0 | 4.0 | 15.004 | O | 1 |
| A5655 | 2.0 | 64.0 | 30.0 | 4.0 | 14.655 | O | 1 |
| A5656 | 1.0 | 65.0 | 30.0 | 4.0 | 14.300 | O | 1 |
| A5657 | 0.0 | 66.0 | 30.0 | 4.0 | 13.945 | O | 1 |
| A5658 | 18.0 | 43.0 | 35.0 | 4.0 | 19.266 | X | 1 |
| A5659 | 17.2 | 43.8 | 35.0 | 4.0 | 19.026 | X | 1 |
| A5660 | 17.1 | 43.9 | 35.0 | 4.0 | 18.996 | O | 1 |
| A5661 | 17.0 | 44.0 | 35.0 | 4.0 | 18.966 | O | 1 |
| A5662 | 15.0 | 46.0 | 35.0 | 4.0 | 18.364 | O | 1 |
| A5663 | 10.0 | 51.0 | 35.0 | 4.0 | 16.860 | O | 1 |
| A5664 | 9.0 | 52.0 | 35.0 | 4.0 | 16.559 | O | 1 |
| A5665 | 8.0 | 53.0 | 35.0 | 4.0 | 16.258 | O | 1 |
| A5666 | 7.0 | 54.0 | 35.0 | 4.0 | 15.957 | O | 1 |
| A5667 | 6.0 | 55.0 | 35.0 | 4.0 | 15.656 | O | 1 |
| A5668 | 5.0 | 56.0 | 35.0 | 4.0 | 15.356 | O | 1 |
| A5669 | 4.0 | 57.0 | 35.0 | 4.0 | 15.055 | O | 1 |
| A5670 | 3.0 | 58.0 | 35.0 | 4.0 | 14.733 | O | 1 |
| A5671 | 2.0 | 59.0 | 35.0 | 4.0 | 14.379 | O | 1 |
| A5672 | 1.0 | 60.0 | 35.0 | 4.0 | 14.024 | O | 1 |
| A5673 | 0.0 | 61.0 | 35.0 | 4.0 | 13.669 | O | 1 |
| A5674 | 18.0 | 38.0 | 40.0 | 4.0 | 19.016 | X | 1 |
| A5675 | 17.9 | 38.1 | 40.0 | 4.0 | 18.986 | O | 1 |
| A5676 | 17.0 | 39.0 | 40.0 | 4.0 | 18.716 | O | 1 |
| A5677 | 15.0 | 41.0 | 40.0 | 4.0 | 18.114 | O | 1 |
| A5678 | 10.0 | 46.0 | 40.0 | 4.0 | 16.610 | O | 1 |
| A5679 | 9.0 | 47.0 | 40.0 | 4.0 | 16.309 | O | 1 |
| A5680 | 8.0 | 48.0 | 40.0 | 4.0 | 16.008 | O | 1 |
| A5681 | 7.0 | 49.0 | 40.0 | 4.0 | 15.707 | O | 1 |
| A5682 | 6.0 | 50.0 | 40.0 | 4.0 | 15.406 | O | 1 |
| A5683 | 5.0 | 51.0 | 40.0 | 4.0 | 15.106 | O | 1 |

[Table 328]

| A5684 | 4.0 | 52.0 | 40.0 | 4.0 | 14.805 | O | 1 |
|---|---|---|---|---|---|---|---|
| A5685 | 3.0 | 53.0 | 40.0 | 4.0 | 14.457 | O | 1 |
| A5686 | 2.0 | 54.0 | 40.0 | 4.0 | 14.103 | O | 1 |
| A5687 | 1.0 | 55.0 | 40.0 | 4.0 | 13.748 | O | 1 |
| A5688 | 0.0 | 56.0 | 40.0 | 4.0 | 13.393 | O | 1 |
| A5689 | 19.0 | 32.0 | 45.0 | 4.0 | 19.067 | X | 1 |
| A5690 | 18.8 | 32.2 | 45.0 | 4.0 | 19.007 | X | 1 |
| A5691 | 18.7 | 32.3 | 45.0 | 4.0 | 18.977 | O | 1 |
| A5692 | 18.0 | 33.0 | 45.0 | 4.0 | 18.766 | O | 1 |
| A5693 | 15.0 | 36.0 | 45.0 | 4.0 | 17.864 | O | 1 |
| A5694 | 10.0 | 41.0 | 45.0 | 4.0 | 16.360 | O | 1 |
| A5695 | 9.0 | 42.0 | 45.0 | 4.0 | 16.059 | O | 1 |
| A5696 | 8.0 | 43.0 | 45.0 | 4.0 | 15.758 | O | 1 |
| A5697 | 7.0 | 44.0 | 45.0 | 4.0 | 15.457 | O | 1 |
| A5698 | 6.0 | 45.0 | 45.0 | 4.0 | 15.157 | O | 1 |
| A5699 | 5.0 | 46.0 | 45.0 | 4.0 | 14.856 | O | 1 |
| A5700 | 4.0 | 47.0 | 45.0 | 4.0 | 14.536 | O | 1 |
| A5701 | 3.0 | 48.0 | 45.0 | 4.0 | 14.181 | O | 1 |
| A5702 | 2.0 | 49.0 | 45.0 | 4.0 | 13.827 | O | 1 |
| A5703 | 1.0 | 50.0 | 45.0 | 4.0 | 13.472 | O | 1 |
| A5704 | 0.0 | 51.0 | 45.0 | 4.0 | 13.117 | O | 1 |
| A5705 | 20.0 | 26.0 | 50.0 | 4.0 | 19.118 | X | 1 |
| A5706 | 19.7 | 26.3 | 50.0 | 4.0 | 19.028 | X | 1 |
| A5707 | 19.6 | 26.4 | 50.0 | 4.0 | 18.998 | O | 1 |
| A5708 | 19.0 | 27.0 | 50.0 | 4.0 | 18.817 | O | 1 |
| A5709 | 15.0 | 31.0 | 50.0 | 4.0 | 17.614 | O | 1 |
| A5710 | 10.0 | 36.0 | 50.0 | 4.0 | 16.110 | O | 1 |
| A5711 | 9.0 | 37.0 | 50.0 | 4.0 | 15.809 | O | 1 |
| A5712 | 8.0 | 38.0 | 50.0 | 4.0 | 15.508 | O | 1 |
| A5713 | 7.0 | 39.0 | 50.0 | 4.0 | 15.207 | O | 1 |
| A5714 | 6.0 | 40.0 | 50.0 | 4.0 | 14.907 | O | 1 |
| A5715 | 5.0 | 41.0 | 50.0 | 4.0 | 14.606 | O | 1 |
| A5716 | 4.0 | 42.0 | 50.0 | 4.0 | 14.260 | O | 1 |
| A5717 | 3.0 | 43.0 | 50.0 | 4.0 | 13.905 | O | 1 |
| A5718 | 2.0 | 44.0 | 50.0 | 4.0 | 13.551 | O | 1 |
| A5719 | 1.0 | 45.0 | 50.0 | 4.0 | 13.196 | O | 1 |
| A5720 | 0.0 | 46.0 | 50.0 | 4.0 | 12.841 | O | 1 |
| A5721 | 21.0 | 20.0 | 55.0 | 4.0 | 19.169 | X | 1 |
| A5722 | 20.5 | 20.5 | 55.0 | 4.0 | 19.019 | X | 1 |
| A5723 | 20.4 | 20.6 | 55.0 | 4.0 | 18.989 | O | 1 |
| A5724 | 20.0 | 21.0 | 55.0 | 4.0 | 18.868 | O | 1 |
| A5725 | 15.0 | 26.0 | 55.0 | 4.0 | 17.364 | O | 1 |
| A5726 | 10.0 | 31.0 | 55.0 | 4.0 | 15.860 | O | 1 |
| A5727 | 9.0 | 32.0 | 55.0 | 4.0 | 15.559 | O | 1 |
| A5728 | 8.0 | 33.0 | 55.0 | 4.0 | 15.258 | O | 1 |
| A5729 | 7.0 | 34.0 | 55.0 | 4.0 | 14.957 | O | 1 |
| A5730 | 6.0 | 35.0 | 55.0 | 4.0 | 14.657 | O | 1 |
| A5731 | 5.0 | 36.0 | 55.0 | 4.0 | 14.339 | O | 1 |
| A5732 | 4.0 | 37.0 | 55.0 | 4.0 | 13.984 | O | 1 |
| A5733 | 3.0 | 38.0 | 55.0 | 4.0 | 13.629 | O | 1 |

[Table 329]

| A5734 | 2.0 | 39.0 | 55.0 | 4.0 | 13.275 | O | 1 |
|---|---|---|---|---|---|---|---|
| A5735 | 1.0 | 40.0 | 55.0 | 4.0 | 12.920 | O | 1 |
| A5736 | 0.0 | 41.0 | 55.0 | 4.0 | 12.565 | O | 1 |
| A5737 | 22.0 | 14.0 | 60.0 | 4.0 | 19.220 | X | 1 |
| A5738 | 21.3 | 14.7 | 60.0 | 4.0 | 19.009 | X | 1 |
| A5739 | 21.2 | 14.8 | 60.0 | 4.0 | 18.979 | O | 1 |
| A5740 | 21.0 | 15.0 | 60.0 | 4.0 | 18.919 | O | 1 |
| A5741 | 20.0 | 16.0 | 60.0 | 4.0 | 18.618 | O | 1 |
| A5742 | 15.0 | 21.0 | 60.0 | 4.0 | 17.114 | O | 1 |
| A5743 | 10.0 | 26.0 | 60.0 | 4.0 | 15.610 | O | 1 |
| A5744 | 9.0 | 27.0 | 60.0 | 4.0 | 15.309 | O | 1 |
| A5745 | 8.0 | 28.0 | 60.0 | 4.0 | 15.008 | O | 1 |
| A5746 | 7.0 | 29.0 | 60.0 | 4.0 | 14.708 | O | 1 |
| A5747 | 6.0 | 30.0 | 60.0 | 4.0 | 14.407 | O | 1 |
| A5748 | 5.0 | 31.0 | 60.0 | 4.0 | 14.063 | O | 1 |
| A5749 | 4.0 | 32.0 | 60.0 | 4.0 | 13.708 | O | 1 |
| A5750 | 3.0 | 33.0 | 60.0 | 4.0 | 13.353 | O | 1 |
| A5751 | 2.0 | 34.0 | 60.0 | 4.0 | 12.999 | O | 1 |
| A5752 | 1.0 | 35.0 | 60.0 | 4.0 | 12.644 | O | 1 |
| A5753 | 0.0 | 36.0 | 60.0 | 4.0 | 12.289 | O | 1 |
| A5754 | 23.0 | 8.0 | 65.0 | 4.0 | 19.271 | X | 1 |
| A5755 | 22.1 | 8.9 | 65.0 | 4.0 | 19.000 | X | 1 |
| A5756 | 22.0 | 9.0 | 65.0 | 4.0 | 18.970 | O | 1 |
| A5757 | 20.0 | 11.0 | 65.0 | 4.0 | 18.368 | O | 1 |
| A5758 | 15.0 | 16.0 | 65.0 | 4.0 | 16.864 | O | 1 |
| A5759 | 10.0 | 21.0 | 65.0 | 4.0 | 15.360 | O | 1 |
| A5760 | 9.0 | 22.0 | 65.0 | 4.0 | 15.059 | O | 1 |
| A5761 | 8.0 | 23.0 | 65.0 | 4.0 | 14.758 | O | 1 |
| A5762 | 7.0 | 24.0 | 65.0 | 4.0 | 14.458 | O | 1 |
| A5763 | 6.0 | 25.0 | 65.0 | 4.0 | 14.141 | O | 1 |
| A5764 | 5.0 | 26.0 | 65.0 | 4.0 | 13.787 | O | 1 |
| A5765 | 4.0 | 27.0 | 65.0 | 4.0 | 13.432 | O | 1 |
| A5766 | 3.0 | 28.0 | 65.0 | 4.0 | 13.077 | O | 1 |
| A5767 | 2.0 | 29.0 | 65.0 | 4.0 | 12.723 | O | 1 |
| A5768 | 1.0 | 30.0 | 65.0 | 4.0 | 12.368 | O | 1 |
| A5769 | 0.0 | 31.0 | 65.0 | 4.0 | 12.013 | O | 1 |
| A5770 | 23.0 | 3.0 | 70.0 | 4.0 | 19.021 | X | 1 |
| A5771 | 22.9 | 3.1 | 70.0 | 4.0 | 18.991 | O | 1 |
| A5772 | 22.0 | 4.0 | 70.0 | 4.0 | 18.720 | O | 1 |
| A5773 | 20.0 | 6.0 | 70.0 | 4.0 | 18.118 | O | 1 |
| A5774 | 15.0 | 11.0 | 70.0 | 4.0 | 16.614 | O | 1 |
| A5775 | 10.0 | 16.0 | 70.0 | 4.0 | 15.110 | O | 1 |
| A5776 | 9.0 | 17.0 | 70.0 | 4.0 | 14.809 | O | 1 |
| A5777 | 8.0 | 18.0 | 70.0 | 4.0 | 14.508 | O | 1 |
| A5778 | 7.0 | 19.0 | 70.0 | 4.0 | 14.208 | O | 1 |
| A5779 | 6.0 | 20.0 | 70.0 | 4.0 | 13.866 | O | 1 |
| A5780 | 5.0 | 21.0 | 70.0 | 4.0 | 13.511 | O | 1 |
| A5781 | 4.0 | 22.0 | 70.0 | 4.0 | 13.156 | O | 1 |
| A5782 | 3.0 | 23.0 | 70.0 | 4.0 | 12.801 | O | 1 |
| A5783 | 2.0 | 24.0 | 70.0 | 4.0 | 12.447 | O | 1 |

[Table 330]

| A5784 | 1.0 | 25.0 | 70.0 | 4.0 | 12.092 | O | 1 |
|---|---|---|---|---|---|---|---|
| A5785 | 0.0 | 26.0 | 70.0 | 4.0 | 11.737 | O | 1 |
| A5786 | 14.0 | 75.0 | 5.0 | 6.0 | 19.238 | X | 1 |
| A5787 | 13.3 | 75.7 | 5.0 | 6.0 | 19.027 | X | 1 |
| A5788 | 13.2 | 75.8 | 5.0 | 6.0 | 18.997 | O | 1 |
| A5789 | 13.0 | 76.0 | 5.0 | 6.0 | 18.937 | O | 1 |
| A5790 | 10.0 | 79.0 | 5.0 | 6.0 | 18.034 | O | 1 |
| A5791 | 9.0 | 80.0 | 5.0 | 6.0 | 17.734 | O | 1 |
| A5792 | 8.0 | 81.0 | 5.0 | 6.0 | 17.433 | O | 1 |
| A5793 | 7.0 | 82.0 | 5.0 | 6.0 | 17.132 | O | 1 |
| A5794 | 6.0 | 83.0 | 5.0 | 6.0 | 16.831 | O | 1 |
| A5795 | 5.0 | 84.0 | 5.0 | 6.0 | 16.530 | O | 1 |
| A5796 | 4.0 | 85.0 | 5.0 | 6.0 | 16.229 | O | 1 |
| A5797 | 3.0 | 86.0 | 5.0 | 6.0 | 15.929 | O | 1 |
| A5798 | 2.0 | 87.0 | 5.0 | 6.0 | 15.628 | O | 1 |
| A5799 | 1.0 | 88.0 | 5.0 | 6.0 | 15.327 | O | 1 |
| A5800 | 0.0 | 89.0 | 5.0 | 6.0 | 15.000 | O | 1 |
| A5801 | 15.0 | 69.0 | 10.0 | 6.0 | 19.289 | X | 1 |
| A5802 | 14.1 | 69.9 | 10.0 | 6.0 | 19.018 | X | 1 |
| A5803 | 14.0 | 70.0 | 10.0 | 6.0 | 18.988 | O | 1 |
| A5804 | 10.0 | 74.0 | 10.0 | 6.0 | 17.784 | O | 1 |
| A5805 | 9.0 | 75.0 | 10.0 | 6.0 | 17.484 | O | 1 |
| A5806 | 8.0 | 76.0 | 10.0 | 6.0 | 17.183 | O | 1 |
| A5807 | 7.0 | 77.0 | 10.0 | 6.0 | 16.882 | O | 1 |
| A5808 | 6.0 | 78.0 | 10.0 | 6.0 | 16.581 | O | 1 |
| A5809 | 5.0 | 79.0 | 10.0 | 6.0 | 16.280 | O | 1 |
| A5810 | 4.0 | 80.0 | 10.0 | 6.0 | 15.979 | O | 1 |
| A5811 | 3.0 | 81.0 | 10.0 | 6.0 | 15.679 | O | 1 |
| A5812 | 2.0 | 82.0 | 10.0 | 6.0 | 15.378 | O | 1 |
| A5813 | 1.0 | 83.0 | 10.0 | 6.0 | 15.077 | O | 1 |
| A5814 | 0.0 | 84.0 | 10.0 | 6.0 | 14.724 | O | 1 |
| A5815 | 15.0 | 64.0 | 15.0 | 6.0 | 19.039 | X | 1 |
| A5816 | 14.9 | 64.1 | 15.0 | 6.0 | 19.009 | X | 1 |
| A5817 | 14.8 | 64.2 | 15.0 | 6.0 | 18.978 | O | 1 |
| A5818 | 14.0 | 65.0 | 15.0 | 6.0 | 18.738 | O | 1 |
| A5819 | 10.0 | 69.0 | 15.0 | 6.0 | 17.534 | O | 1 |
| A5820 | 9.0 | 70.0 | 15.0 | 6.0 | 17.234 | O | 1 |
| A5821 | 8.0 | 71.0 | 15.0 | 6.0 | 16.933 | O | 1 |
| A5822 | 7.0 | 72.0 | 15.0 | 6.0 | 16.632 | O | 1 |
| A5823 | 6.0 | 73.0 | 15.0 | 6.0 | 16.331 | O | 1 |
| A5824 | 5.0 | 74.0 | 15.0 | 6.0 | 16.030 | O | 1 |
| A5825 | 4.0 | 75.0 | 15.0 | 6.0 | 15.730 | O | 1 |
| A5826 | 3.0 | 76.0 | 15.0 | 6.0 | 15.429 | O | 1 |
| A5827 | 2.0 | 77.0 | 15.0 | 6.0 | 15.128 | O | 1 |
| A5828 | 1.0 | 78.0 | 15.0 | 6.0 | 14.803 | O | 1 |
| A5829 | 0.0 | 79.0 | 15.0 | 6.0 | 14.448 | O | 1 |
| A5830 | 16.0 | 58.0 | 20.0 | 6.0 | 19.090 | X | 1 |
| A5831 | 15.8 | 58.2 | 20.0 | 6.0 | 19.029 | X | 1 |
| A5832 | 15.7 | 58.3 | 20.0 | 6.0 | 18.999 | O | 1 |
| A5833 | 15.0 | 59.0 | 20.0 | 6.0 | 18.789 | O | 1 |

[Table 331]

| | | | | | | | |
|---|---|---|---|---|---|---|---|
| A5834 | 10.0 | 64.0 | 20.0 | 6.0 | 17.285 | O | 1 |
| A5835 | 9.0 | 65.0 | 20.0 | 6.0 | 16.984 | O | 1 |
| A5836 | 8.0 | 66.0 | 20.0 | 6.0 | 16.683 | O | 1 |
| A5837 | 7.0 | 67.0 | 20.0 | 6.0 | 16.382 | O | 1 |
| A5838 | 6.0 | 68.0 | 20.0 | 6.0 | 16.081 | O | 1 |
| A5839 | 5.0 | 69.0 | 20.0 | 6.0 | 15.780 | O | 1 |
| A5840 | 4.0 | 70.0 | 20.0 | 6.0 | 15.480 | O | 1 |
| A5841 | 3.0 | 71.0 | 20.0 | 6.0 | 15.179 | O | 1 |
| A5842 | 2.0 | 72.0 | 20.0 | 6.0 | 14.878 | O | 1 |
| A5843 | 1.0 | 73.0 | 20.0 | 6.0 | 14.527 | O | 1 |
| A5844 | 0.0 | 74.0 | 20.0 | 6.0 | 14.172 | O | 1 |
| A5845 | 17.0 | 52.0 | 25.0 | 6.0 | 19.140 | X | 1 |
| A5846 | 16.6 | 52.4 | 25.0 | 6.0 | 19.020 | X | 1 |
| A5847 | 16.5 | 52.5 | 25.0 | 6.0 | 18.990 | O | 1 |
| A5848 | 16.0 | 53.0 | 25.0 | 6.0 | 18.840 | O | 1 |
| A5849 | 15.0 | 54.0 | 25.0 | 6.0 | 18.539 | O | 1 |
| A5850 | 10.0 | 59.0 | 25.0 | 6.0 | 17.035 | O | 1 |
| A5851 | 9.0 | 60.0 | 25.0 | 6.0 | 16.734 | O | 1 |
| A5852 | 8.0 | 61.0 | 25.0 | 6.0 | 16.433 | O | 1 |
| A5853 | 7.0 | 62.0 | 25.0 | 6.0 | 16.132 | O | 1 |
| A5854 | 6.0 | 63.0 | 25.0 | 6.0 | 15.831 | O | 1 |
| A5855 | 5.0 | 64.0 | 25.0 | 6.0 | 15.530 | O | 1 |
| A5856 | 4.0 | 65.0 | 25.0 | 6.0 | 15.230 | O | 1 |
| A5857 | 3.0 | 66.0 | 25.0 | 6.0 | 14.929 | O | 1 |
| A5858 | 2.0 | 67.0 | 25.0 | 6.0 | 14.606 | O | 1 |
| A5859 | 1.0 | 68.0 | 25.0 | 6.0 | 14.251 | O | 1 |
| A5860 | 0.0 | 69.0 | 25.0 | 6.0 | 13.896 | O | 1 |
| A5861 | 18.0 | 46.0 | 30.0 | 6.0 | 19.191 | X | 1 |
| A5862 | 17.4 | 46.6 | 30.0 | 6.0 | 19.011 | X | 1 |
| A5863 | 17.3 | 46.7 | 30.0 | 6.0 | 18.981 | O | 1 |
| A5864 | 17.0 | 47.0 | 30.0 | 6.0 | 18.890 | O | 1 |
| A5865 | 15.0 | 49.0 | 30.0 | 6.0 | 18.289 | O | 1 |
| A5866 | 10.0 | 54.0 | 30.0 | 6.0 | 16.785 | O | 1 |
| A5867 | 9.0 | 55.0 | 30.0 | 6.0 | 16.484 | O | 1 |
| A5868 | 8.0 | 56.0 | 30.0 | 6.0 | 16.183 | O | 1 |
| A5869 | 7.0 | 57.0 | 30.0 | 6.0 | 15.882 | O | 1 |
| A5870 | 6.0 | 58.0 | 30.0 | 6.0 | 15.581 | O | 1 |
| A5871 | 5.0 | 59.0 | 30.0 | 6.0 | 15.281 | O | 1 |
| A5872 | 4.0 | 60.0 | 30.0 | 6.0 | 14.980 | O | 1 |
| A5873 | 3.0 | 61.0 | 30.0 | 6.0 | 14.679 | O | 1 |
| A5874 | 2.0 | 62.0 | 30.0 | 6.0 | 14.330 | O | 1 |
| A5875 | 1.0 | 63.0 | 30.0 | 6.0 | 13.975 | O | 1 |
| A5876 | 0.0 | 64.0 | 30.0 | 6.0 | 13.620 | O | 1 |
| A5877 | 19.0 | 40.0 | 35.0 | 6.0 | 19.242 | X | 1 |
| A5878 | 18.2 | 40.8 | 35.0 | 6.0 | 19.002 | X | 1 |
| A5879 | 18.1 | 40.9 | 35.0 | 6.0 | 18.971 | O | 1 |
| A5880 | 18.0 | 41.0 | 35.0 | 6.0 | 18.941 | O | 1 |
| A5881 | 15.0 | 44.0 | 35.0 | 6.0 | 18.039 | O | 1 |
| A5882 | 10.0 | 49.0 | 35.0 | 6.0 | 16.535 | O | 1 |
| A5883 | 9.0 | 50.0 | 35.0 | 6.0 | 16.234 | O | 1 |

[Table 332]

351

| A5884 | 8.0 | 51.0 | 35.0 | 6.0 | 15.933 | O | 1 |
|---|---|---|---|---|---|---|---|
| A5885 | 7.0 | 52.0 | 35.0 | 6.0 | 15.632 | O | 1 |
| A5886 | 6.0 | 53.0 | 35.0 | 6.0 | 15.331 | O | 1 |
| A5887 | 5.0 | 54.0 | 35.0 | 6.0 | 15.031 | O | 1 |
| A5888 | 4.0 | 55.0 | 35.0 | 6.0 | 14.730 | O | 1 |
| A5889 | 3.0 | 56.0 | 35.0 | 6.0 | 14.408 | O | 1 |
| A5890 | 2.0 | 57.0 | 35.0 | 6.0 | 14.054 | O | 1 |
| A5891 | 1.0 | 58.0 | 35.0 | 6.0 | 13.699 | O | 1 |
| A5892 | 0.0 | 59.0 | 35.0 | 6.0 | 13.344 | O | 1 |
| A5893 | 20.0 | 34.0 | 40.0 | 6.0 | 19.293 | X | 1 |
| A5894 | 19.1 | 34.9 | 40.0 | 6.0 | 19.022 | X | 1 |
| A5895 | 19.0 | 35.0 | 40.0 | 6.0 | 18.992 | O | 1 |
| A5896 | 15.0 | 39.0 | 40.0 | 6.0 | 17.789 | O | 1 |
| A5897 | 10.0 | 44.0 | 40.0 | 6.0 | 16.285 | O | 1 |
| A5898 | 9.0 | 45.0 | 40.0 | 6.0 | 15.984 | O | 1 |
| A5899 | 8.0 | 46.0 | 40.0 | 6.0 | 15.683 | O | 1 |
| A5900 | 7.0 | 47.0 | 40.0 | 6.0 | 15.382 | O | 1 |
| A5901 | 6.0 | 48.0 | 40.0 | 6.0 | 15.081 | O | 1 |
| A5902 | 5.0 | 49.0 | 40.0 | 6.0 | 14.781 | O | 1 |
| A5903 | 4.0 | 50.0 | 40.0 | 6.0 | 14.480 | O | 1 |
| A5904 | 3.0 | 51.0 | 40.0 | 6.0 | 14.132 | O | 1 |
| A5905 | 2.0 | 52.0 | 40.0 | 6.0 | 13.778 | O | 1 |
| A5906 | 1.0 | 53.0 | 40.0 | 6.0 | 13.423 | O | 1 |
| A5907 | 0.0 | 54.0 | 40.0 | 6.0 | 13.068 | O | 1 |
| A5908 | 20.0 | 29.0 | 45.0 | 6.0 | 19.043 | X | 1 |
| A5909 | 19.9 | 29.1 | 45.0 | 6.0 | 19.013 | X | 1 |
| A5910 | 19.8 | 29.2 | 45.0 | 6.0 | 18.983 | O | 1 |
| A5911 | 19.0 | 30.0 | 45.0 | 6.0 | 18.742 | O | 1 |
| A5912 | 15.0 | 34.0 | 45.0 | 6.0 | 17.539 | O | 1 |
| A5913 | 10.0 | 39.0 | 45.0 | 6.0 | 16.035 | O | 1 |
| A5914 | 9.0 | 40.0 | 45.0 | 6.0 | 15.734 | O | 1 |
| A5915 | 8.0 | 41.0 | 45.0 | 6.0 | 15.433 | O | 1 |
| A5916 | 7.0 | 42.0 | 45.0 | 6.0 | 15.132 | O | 1 |
| A5917 | 6.0 | 43.0 | 45.0 | 6.0 | 14.832 | O | 1 |
| A5918 | 5.0 | 44.0 | 45.0 | 6.0 | 14.531 | O | 1 |
| A5919 | 4.0 | 45.0 | 45.0 | 6.0 | 14.211 | O | 1 |
| A5920 | 3.0 | 46.0 | 45.0 | 6.0 | 13.856 | O | 1 |
| A5921 | 2.0 | 47.0 | 45.0 | 6.0 | 13.502 | O | 1 |
| A5922 | 1.0 | 48.0 | 45.0 | 6.0 | 13.147 | O | 1 |
| A5923 | 0.0 | 49.0 | 45.0 | 6.0 | 12.792 | O | 1 |
| A5924 | 21.0 | 23.0 | 50.0 | 6.0 | 19.094 | X | 1 |
| A5925 | 20.7 | 23.3 | 50.0 | 6.0 | 19.004 | X | 1 |
| A5926 | 20.6 | 23.4 | 50.0 | 6.0 | 18.974 | O | 1 |
| A5927 | 20.0 | 24.0 | 50.0 | 6.0 | 18.793 | O | 1 |
| A5928 | 15.0 | 29.0 | 50.0 | 6.0 | 17.289 | O | 1 |
| A5929 | 10.0 | 34.0 | 50.0 | 6.0 | 15.785 | O | 1 |
| A5930 | 9.0 | 35.0 | 50.0 | 6.0 | 15.484 | O | 1 |
| A5931 | 8.0 | 36.0 | 50.0 | 6.0 | 15.183 | O | 1 |
| A5932 | 7.0 | 37.0 | 50.0 | 6.0 | 14.882 | O | 1 |
| A5933 | 6.0 | 38.0 | 50.0 | 6.0 | 14.582 | O | 1 |

[Table 333]

| | | | | | | | |
|---|---|---|---|---|---|---|---|
| A5934 | 5.0 | 39.0 | 50.0 | 6.0 | 14.281 | O | 1 |
| A5935 | 4.0 | 40.0 | 50.0 | 6.0 | 13.935 | O | 1 |
| A5936 | 3.0 | 41.0 | 50.0 | 6.0 | 13.580 | O | 1 |
| A5937 | 2.0 | 42.0 | 50.0 | 6.0 | 13.226 | O | 1 |
| A5938 | 1.0 | 43.0 | 50.0 | 6.0 | 12.871 | O | 1 |
| A5939 | 0.0 | 44.0 | 50.0 | 6.0 | 12.516 | O | 1 |
| A5940 | 22.0 | 17.0 | 55.0 | 6.0 | 19.145 | X | 1 |
| A5941 | 21.6 | 17.4 | 55.0 | 6.0 | 19.025 | X | 1 |
| A5942 | 21.5 | 17.5 | 55.0 | 6.0 | 18.994 | O | 1 |
| A5943 | 21.0 | 18.0 | 55.0 | 6.0 | 18.844 | O | 1 |
| A5944 | 20.0 | 19.0 | 55.0 | 6.0 | 18.543 | O | 1 |
| A5945 | 15.0 | 24.0 | 55.0 | 6.0 | 17.039 | O | 1 |
| A5946 | 10.0 | 29.0 | 55.0 | 6.0 | 15.535 | O | 1 |
| A5947 | 9.0 | 30.0 | 55.0 | 6.0 | 15.234 | O | 1 |
| A5948 | 8.0 | 31.0 | 55.0 | 6.0 | 14.933 | O | 1 |
| A5949 | 7.0 | 32.0 | 55.0 | 6.0 | 14.632 | O | 1 |
| A5950 | 6.0 | 33.0 | 55.0 | 6.0 | 14.332 | O | 1 |
| A5951 | 5.0 | 34.0 | 55.0 | 6.0 | 14.014 | O | 1 |
| A5952 | 4.0 | 35.0 | 55.0 | 6.0 | 13.659 | O | 1 |
| A5953 | 3.0 | 36.0 | 55.0 | 6.0 | 13.304 | O | 1 |
| A5954 | 2.0 | 37.0 | 55.0 | 6.0 | 12.950 | O | 1 |
| A5955 | 1.0 | 38.0 | 55.0 | 6.0 | 12.595 | O | 1 |
| A5956 | 0.0 | 39.0 | 55.0 | 6.0 | 12.240 | O | 1 |
| A5957 | 23.0 | 11.0 | 60.0 | 6.0 | 19.196 | X | 1 |
| A5958 | 22.4 | 11.6 | 60.0 | 6.0 | 19.015 | X | 1 |
| A5959 | 22.3 | 11.7 | 60.0 | 6.0 | 18.985 | O | 1 |
| A5960 | 22.0 | 12.0 | 60.0 | 6.0 | 18.895 | O | 1 |
| A5961 | 20.0 | 14.0 | 60.0 | 6.0 | 18.293 | O | 1 |
| A5962 | 15.0 | 19.0 | 60.0 | 6.0 | 16.789 | O | 1 |
| A5963 | 10.0 | 24.0 | 60.0 | 6.0 | 15.285 | O | 1 |
| A5964 | 9.0 | 25.0 | 60.0 | 6.0 | 14.984 | O | 1 |
| A5965 | 8.0 | 26.0 | 60.0 | 6.0 | 14.683 | O | 1 |
| A5966 | 7.0 | 27.0 | 60.0 | 6.0 | 14.382 | O | 1 |
| A5967 | 6.0 | 28.0 | 60.0 | 6.0 | 14.082 | O | 1 |
| A5968 | 5.0 | 29.0 | 60.0 | 6.0 | 13.738 | O | 1 |
| A5969 | 4.0 | 30.0 | 60.0 | 6.0 | 13.383 | O | 1 |
| A5970 | 3.0 | 31.0 | 60.0 | 6.0 | 13.028 | O | 1 |
| A5971 | 2.0 | 32.0 | 60.0 | 6.0 | 12.674 | O | 1 |
| A5972 | 1.0 | 33.0 | 60.0 | 6.0 | 12.319 | O | 1 |
| A5973 | 0.0 | 34.0 | 60.0 | 6.0 | 11.964 | O | 1 |
| A5974 | 24.0 | 5.0 | 65.0 | 6.0 | 19.247 | X | 1 |
| A5975 | 23.2 | 5.8 | 65.0 | 6.0 | 19.006 | X | 1 |
| A5976 | 23.1 | 5.9 | 65.0 | 6.0 | 18.976 | O | 1 |
| A5977 | 23.0 | 6.0 | 65.0 | 6.0 | 18.946 | O | 1 |
| A5978 | 20.0 | 9.0 | 65.0 | 6.0 | 18.043 | O | 1 |
| A5979 | 15.0 | 14.0 | 65.0 | 6.0 | 16.539 | O | 1 |
| A5980 | 10.0 | 19.0 | 65.0 | 6.0 | 15.035 | O | 1 |
| A5981 | 9.0 | 20.0 | 65.0 | 6.0 | 14.734 | O | 1 |
| A5982 | 8.0 | 21.0 | 65.0 | 6.0 | 14.433 | O | 1 |
| A5983 | 7.0 | 22.0 | 65.0 | 6.0 | 14.133 | O | 1 |

[Table 334]

| | | | | | | | |
|---|---|---|---|---|---|---|---|
| A5984 | 6.0 | 23.0 | 65.0 | 6.0 | 13.816 | O | 1 |
| A5985 | 5.0 | 24.0 | 65.0 | 6.0 | 13.462 | O | 1 |
| A5986 | 4.0 | 25.0 | 65.0 | 6.0 | 13.107 | O | 1 |
| A5987 | 3.0 | 26.0 | 65.0 | 6.0 | 12.752 | O | 1 |
| A5988 | 2.0 | 27.0 | 65.0 | 6.0 | 12.398 | O | 1 |
| A5989 | 1.0 | 28.0 | 65.0 | 6.0 | 12.043 | O | 1 |
| A5990 | 0.0 | 29.0 | 65.0 | 6.0 | 11.688 | O | 1 |
| A5991 | 15.0 | 72.0 | 5.0 | 8.0 | 19.214 | X | 1 |
| A5992 | 14.3 | 72.7 | 5.0 | 8.0 | 19.003 | X | 1 |
| A5993 | 14.2 | 72.8 | 5.0 | 8.0 | 18.973 | O | 1 |
| A5994 | 14.0 | 73.0 | 5.0 | 8.0 | 18.913 | O | 1 |
| A5995 | 10.0 | 77.0 | 5.0 | 8.0 | 17.709 | O | 1 |
| A5996 | 9.0 | 78.0 | 5.0 | 8.0 | 17.409 | O | 1 |
| A5997 | 8.0 | 79.0 | 5.0 | 8.0 | 17.108 | O | 1 |
| A5998 | 7.0 | 80.0 | 5.0 | 8.0 | 16.807 | O | 1 |
| A5999 | 6.0 | 81.0 | 5.0 | 8.0 | 16.506 | O | 1 |
| A6000 | 5.0 | 82.0 | 5.0 | 8.0 | 16.205 | O | 1 |
| A6001 | 4.0 | 83.0 | 5.0 | 8.0 | 15.904 | O | 1 |
| A6002 | 3.0 | 84.0 | 5.0 | 8.0 | 15.604 | O | 1 |
| A6003 | 2.0 | 85.0 | 5.0 | 8.0 | 15.303 | O | 1 |
| A6004 | 1.0 | 86.0 | 5.0 | 8.0 | 15.002 | O | 1 |
| A6005 | 0.0 | 87.0 | 5.0 | 8.0 | 14.675 | O | 1 |
| A6006 | 16.0 | 66.0 | 10.0 | 8.0 | 19.264 | X | 1 |
| A6007 | 15.2 | 66.8 | 10.0 | 8.0 | 19.024 | X | 1 |
| A6008 | 15.1 | 66.9 | 10.0 | 8.0 | 18.994 | O | 1 |
| A6009 | 15.0 | 67.0 | 10.0 | 8.0 | 18.964 | O | 1 |
| A6010 | 10.0 | 72.0 | 10.0 | 8.0 | 17.459 | O | 1 |
| A6011 | 9.0 | 73.0 | 10.0 | 8.0 | 17.159 | O | 1 |
| A6012 | 8.0 | 74.0 | 10.0 | 8.0 | 16.858 | O | 1 |
| A6013 | 7.0 | 75.0 | 10.0 | 8.0 | 16.557 | O | 1 |
| A6014 | 6.0 | 76.0 | 10.0 | 8.0 | 16.256 | O | 1 |
| A6015 | 5.0 | 77.0 | 10.0 | 8.0 | 15.955 | O | 1 |
| A6016 | 4.0 | 78.0 | 10.0 | 8.0 | 15.654 | O | 1 |
| A6017 | 3.0 | 79.0 | 10.0 | 8.0 | 15.354 | O | 1 |
| A6018 | 2.0 | 80.0 | 10.0 | 8.0 | 15.053 | O | 1 |
| A6019 | 1.0 | 81.0 | 10.0 | 8.0 | 14.752 | O | 1 |
| A6020 | 0.0 | 82.0 | 10.0 | 8.0 | 14.399 | O | 1 |
| A6021 | 16.0 | 61.0 | 15.0 | 8.0 | 19.014 | X | 1 |
| A6022 | 15.9 | 61.1 | 15.0 | 8.0 | 18.984 | O | 1 |
| A6023 | 15.0 | 62.0 | 15.0 | 8.0 | 18.714 | O | 1 |
| A6024 | 10.0 | 67.0 | 15.0 | 8.0 | 17.209 | O | 1 |
| A6025 | 9.0 | 68.0 | 15.0 | 8.0 | 16.909 | O | 1 |
| A6026 | 8.0 | 69.0 | 15.0 | 8.0 | 16.608 | O | 1 |
| A6027 | 7.0 | 70.0 | 15.0 | 8.0 | 16.307 | O | 1 |
| A6028 | 6.0 | 71.0 | 15.0 | 8.0 | 16.006 | O | 1 |
| A6029 | 5.0 | 72.0 | 15.0 | 8.0 | 15.705 | O | 1 |
| A6030 | 4.0 | 73.0 | 15.0 | 8.0 | 15.404 | O | 1 |
| A6031 | 3.0 | 74.0 | 15.0 | 8.0 | 15.104 | O | 1 |
| A6032 | 2.0 | 75.0 | 15.0 | 8.0 | 14.803 | O | 1 |
| A6033 | 1.0 | 76.0 | 15.0 | 8.0 | 14.478 | O | 1 |

[Table 335]

| | | | | | | | |
|---|---|---|---|---|---|---|---|
| A6034 | 0.0 | 77.0 | 15.0 | 8.0 | 14.123 | O | 1 |
| A6035 | 17.0 | 55.0 | 20.0 | 8.0 | 19.065 | X | 1 |
| A6036 | 16.8 | 55.2 | 20.0 | 8.0 | 19.005 | X | 1 |
| A6037 | 16.7 | 55.3 | 20.0 | 8.0 | 18.975 | O | 1 |
| A6038 | 16.0 | 56.0 | 20.0 | 8.0 | 18.765 | O | 1 |
| A6039 | 15.0 | 57.0 | 20.0 | 8.0 | 18.464 | O | 1 |
| A6040 | 10.0 | 62.0 | 20.0 | 8.0 | 16.960 | O | 1 |
| A6041 | 9.0 | 63.0 | 20.0 | 8.0 | 16.659 | O | 1 |
| A6042 | 8.0 | 64.0 | 20.0 | 8.0 | 16.358 | O | 1 |
| A6043 | 7.0 | 65.0 | 20.0 | 8.0 | 16.057 | O | 1 |
| A6044 | 6.0 | 66.0 | 20.0 | 8.0 | 15.756 | O | 1 |
| A6045 | 5.0 | 67.0 | 20.0 | 8.0 | 15.455 | O | 1 |
| A6046 | 4.0 | 68.0 | 20.0 | 8.0 | 15.155 | O | 1 |
| A6047 | 3.0 | 69.0 | 20.0 | 8.0 | 14.854 | O | 1 |
| A6048 | 2.0 | 70.0 | 20.0 | 8.0 | 14.553 | O | 1 |
| A6049 | 1.0 | 71.0 | 20.0 | 8.0 | 14.202 | O | 1 |
| A6050 | 0.0 | 72.0 | 20.0 | 8.0 | 13.847 | O | 1 |
| A6051 | 18.0 | 49.0 | 25.0 | 8.0 | 19.116 | X | 1 |
| A6052 | 17.7 | 49.3 | 25.0 | 8.0 | 19.026 | X | 1 |
| A6053 | 17.6 | 49.4 | 25.0 | 8.0 | 18.996 | O | 1 |
| A6054 | 17.0 | 50.0 | 25.0 | 8.0 | 18.815 | O | 1 |
| A6055 | 15.0 | 52.0 | 25.0 | 8.0 | 18.214 | O | 1 |
| A6056 | 10.0 | 57.0 | 25.0 | 8.0 | 16.710 | O | 1 |
| A6057 | 9.0 | 58.0 | 25.0 | 8.0 | 16.409 | O | 1 |
| A6058 | 8.0 | 59.0 | 25.0 | 8.0 | 16.108 | O | 1 |
| A6059 | 7.0 | 60.0 | 25.0 | 8.0 | 15.807 | O | 1 |
| A6060 | 6.0 | 61.0 | 25.0 | 8.0 | 15.506 | O | 1 |
| A6061 | 5.0 | 62.0 | 25.0 | 8.0 | 15.205 | O | 1 |
| A6062 | 4.0 | 63.0 | 25.0 | 8.0 | 14.905 | O | 1 |
| A6063 | 3.0 | 64.0 | 25.0 | 8.0 | 14.604 | O | 1 |
| A6064 | 2.0 | 65.0 | 25.0 | 8.0 | 14.280 | O | 1 |
| A6065 | 1.0 | 66.0 | 25.0 | 8.0 | 13.926 | O | 1 |
| A6066 | 0.0 | 67.0 | 25.0 | 8.0 | 13.571 | O | 1 |
| A6067 | 19.0 | 43.0 | 30.0 | 8.0 | 19.167 | X | 1 |
| A6068 | 18.5 | 43.5 | 30.0 | 8.0 | 19.017 | X | 1 |
| A6069 | 18.4 | 43.6 | 30.0 | 8.0 | 18.987 | O | 1 |
| A6070 | 18.0 | 44.0 | 30.0 | 8.0 | 18.866 | O | 1 |
| A6071 | 15.0 | 47.0 | 30.0 | 8.0 | 17.964 | O | 1 |
| A6072 | 10.0 | 52.0 | 30.0 | 8.0 | 16.460 | O | 1 |
| A6073 | 9.0 | 53.0 | 30.0 | 8.0 | 16.159 | O | 1 |
| A6074 | 8.0 | 54.0 | 30.0 | 8.0 | 15.858 | O | 1 |
| A6075 | 7.0 | 55.0 | 30.0 | 8.0 | 15.557 | O | 1 |
| A6076 | 6.0 | 56.0 | 30.0 | 8.0 | 15.256 | O | 1 |
| A6077 | 5.0 | 57.0 | 30.0 | 8.0 | 14.955 | O | 1 |
| A6078 | 4.0 | 58.0 | 30.0 | 8.0 | 14.655 | O | 1 |
| A6079 | 3.0 | 59.0 | 30.0 | 8.0 | 14.354 | O | 1 |
| A6080 | 2.0 | 60.0 | 30.0 | 8.0 | 14.005 | O | 1 |
| A6081 | 1.0 | 61.0 | 30.0 | 8.0 | 13.650 | O | 1 |
| A6082 | 0.0 | 62.0 | 30.0 | 8.0 | 13.295 | O | 1 |
| A6083 | 20.0 | 37.0 | 35.0 | 8.0 | 19.218 | X | 1 |

[Table 336]

| A6084 | 19.3 | 37.7 | 35.0 | 8.0 | 19.007 | X | 1 |
|---|---|---|---|---|---|---|---|
| A6085 | 19.2 | 37.8 | 35.0 | 8.0 | 18.977 | O | 1 |
| A6086 | 19.0 | 38.0 | 35.0 | 8.0 | 18.917 | O | 1 |
| A6087 | 15.0 | 42.0 | 35.0 | 8.0 | 17.714 | O | 1 |
| A6088 | 10.0 | 47.0 | 35.0 | 8.0 | 16.210 | O | 1 |
| A6089 | 9.0 | 48.0 | 35.0 | 8.0 | 15.909 | O | 1 |
| A6090 | 8.0 | 49.0 | 35.0 | 8.0 | 15.608 | O | 1 |
| A6091 | 7.0 | 50.0 | 35.0 | 8.0 | 15.307 | O | 1 |
| A6092 | 6.0 | 51.0 | 35.0 | 8.0 | 15.006 | O | 1 |
| A6093 | 5.0 | 52.0 | 35.0 | 8.0 | 14.706 | O | 1 |
| A6094 | 4.0 | 53.0 | 35.0 | 8.0 | 14.405 | O | 1 |
| A6095 | 3.0 | 54.0 | 35.0 | 8.0 | 14.083 | O | 1 |
| A6096 | 2.0 | 55.0 | 35.0 | 8.0 | 13.729 | O | 1 |
| A6097 | 1.0 | 56.0 | 35.0 | 8.0 | 13.374 | O | 1 |
| A6098 | 0.0 | 57.0 | 35.0 | 8.0 | 13.019 | O | 1 |
| A6099 | 21.0 | 31.0 | 40.0 | 8.0 | 19.269 | X | 1 |
| A6100 | 20.2 | 31.8 | 40.0 | 8.0 | 19.028 | X | 1 |
| A6101 | 20.1 | 31.9 | 40.0 | 8.0 | 18.998 | O | 1 |
| A6102 | 20.0 | 32.0 | 40.0 | 8.0 | 18.968 | O | 1 |
| A6103 | 15.0 | 37.0 | 40.0 | 8.0 | 17.464 | O | 1 |
| A6104 | 10.0 | 42.0 | 40.0 | 8.0 | 15.960 | O | 1 |
| A6105 | 9.0 | 43.0 | 40.0 | 8.0 | 15.659 | O | 1 |
| A6106 | 8.0 | 44.0 | 40.0 | 8.0 | 15.358 | O | 1 |
| A6107 | 7.0 | 45.0 | 40.0 | 8.0 | 15.057 | O | 1 |
| A6108 | 6.0 | 46.0 | 40.0 | 8.0 | 14.756 | O | 1 |
| A6109 | 5.0 | 47.0 | 40.0 | 8.0 | 14.456 | O | 1 |
| A6110 | 4.0 | 48.0 | 40.0 | 8.0 | 14.155 | O | 1 |
| A6111 | 3.0 | 49.0 | 40.0 | 8.0 | 13.807 | O | 1 |
| A6112 | 2.0 | 50.0 | 40.0 | 8.0 | 13.453 | O | 1 |
| A6113 | 1.0 | 51.0 | 40.0 | 8.0 | 13.098 | O | 1 |
| A6114 | 0.0 | 52.0 | 40.0 | 8.0 | 12.743 | O | 1 |
| A6115 | 21.0 | 26.0 | 45.0 | 8.0 | 19.019 | X | 1 |
| A6116 | 20.9 | 26.1 | 45.0 | 8.0 | 18.989 | O | 1 |
| A6117 | 20.0 | 27.0 | 45.0 | 8.0 | 18.718 | O | 1 |
| A6118 | 15.0 | 32.0 | 45.0 | 8.0 | 17.214 | O | 1 |
| A6119 | 10.0 | 37.0 | 45.0 | 8.0 | 15.710 | O | 1 |
| A6120 | 9.0 | 38.0 | 45.0 | 8.0 | 15.409 | O | 1 |
| A6121 | 8.0 | 39.0 | 45.0 | 8.0 | 15.108 | O | 1 |
| A6122 | 7.0 | 40.0 | 45.0 | 8.0 | 14.807 | O | 1 |
| A6123 | 6.0 | 41.0 | 45.0 | 8.0 | 14.506 | O | 1 |
| A6124 | 5.0 | 42.0 | 45.0 | 8.0 | 14.206 | O | 1 |
| A6125 | 4.0 | 43.0 | 45.0 | 8.0 | 13.886 | O | 1 |
| A6126 | 3.0 | 44.0 | 45.0 | 8.0 | 13.531 | O | 1 |
| A6127 | 2.0 | 45.0 | 45.0 | 8.0 | 13.177 | O | 1 |
| A6128 | 1.0 | 46.0 | 45.0 | 8.0 | 12.822 | O | 1 |
| A6129 | 0.0 | 47.0 | 45.0 | 8.0 | 12.467 | O | 1 |
| A6130 | 22.0 | 20.0 | 50.0 | 8.0 | 19.070 | X | 1 |
| A6131 | 21.8 | 20.2 | 50.0 | 8.0 | 19.010 | X | 1 |
| A6132 | 21.7 | 20.3 | 50.0 | 8.0 | 18.980 | O | 1 |
| A6133 | 21.0 | 21.0 | 50.0 | 8.0 | 18.769 | O | 1 |

[Table 337]

| | | | | | | |
|---|---|---|---|---|---|---|
| A6134 | 20.0 | 22.0 | 50.0 | 8.0 | 18.468 | O | 1 |
| A6135 | 15.0 | 27.0 | 50.0 | 8.0 | 16.964 | O | 1 |
| A6136 | 10.0 | 32.0 | 50.0 | 8.0 | 15.460 | O | 1 |
| A6137 | 9.0 | 33.0 | 50.0 | 8.0 | 15.159 | O | 1 |
| A6138 | 8.0 | 34.0 | 50.0 | 8.0 | 14.858 | O | 1 |
| A6139 | 7.0 | 35.0 | 50.0 | 8.0 | 14.557 | O | 1 |
| A6140 | 6.0 | 36.0 | 50.0 | 8.0 | 14.257 | O | 1 |
| A6141 | 5.0 | 37.0 | 50.0 | 8.0 | 13.956 | O | 1 |
| A6142 | 4.0 | 38.0 | 50.0 | 8.0 | 13.610 | O | 1 |
| A6143 | 3.0 | 39.0 | 50.0 | 8.0 | 13.255 | O | 1 |
| A6144 | 2.0 | 40.0 | 50.0 | 8.0 | 12.901 | O | 1 |
| A6145 | 1.0 | 41.0 | 50.0 | 8.0 | 12.546 | O | 1 |
| A6146 | 0.0 | 42.0 | 50.0 | 8.0 | 12.191 | O | 1 |
| A6147 | 23.0 | 14.0 | 55.0 | 8.0 | 19.121 | X | 1 |
| A6148 | 22.6 | 14.4 | 55.0 | 8.0 | 19.000 | X | 1 |
| A6149 | 22.5 | 14.5 | 55.0 | 8.0 | 18.970 | O | 1 |
| A6150 | 22.0 | 15.0 | 55.0 | 8.0 | 18.820 | O | 1 |
| A6151 | 20.0 | 17.0 | 55.0 | 8.0 | 18.218 | O | 1 |
| A6152 | 15.0 | 22.0 | 55.0 | 8.0 | 16.714 | O | 1 |
| A6153 | 10.0 | 27.0 | 55.0 | 8.0 | 15.210 | O | 1 |
| A6154 | 9.0 | 28.0 | 55.0 | 8.0 | 14.909 | O | 1 |
| A6155 | 8.0 | 29.0 | 55.0 | 8.0 | 14.608 | O | 1 |
| A6156 | 7.0 | 30.0 | 55.0 | 8.0 | 14.307 | O | 1 |
| A6157 | 6.0 | 31.0 | 55.0 | 8.0 | 14.007 | O | 1 |
| A6158 | 5.0 | 32.0 | 55.0 | 8.0 | 13.689 | O | 1 |
| A6159 | 4.0 | 33.0 | 55.0 | 8.0 | 13.334 | O | 1 |
| A6160 | 3.0 | 34.0 | 55.0 | 8.0 | 12.979 | O | 1 |
| A6161 | 2.0 | 35.0 | 55.0 | 8.0 | 12.625 | O | 1 |
| A6162 | 1.0 | 36.0 | 55.0 | 8.0 | 12.270 | O | 1 |
| A6163 | 0.0 | 37.0 | 55.0 | 8.0 | 11.915 | O | 1 |
| A6164 | 24.0 | 8.0 | 60.0 | 8.0 | 19.172 | X | 1 |
| A6165 | 23.5 | 8.5 | 60.0 | 8.0 | 19.021 | X | 1 |
| A6166 | 23.4 | 8.6 | 60.0 | 8.0 | 18.991 | O | 1 |
| A6167 | 23.0 | 9.0 | 60.0 | 8.0 | 18.871 | O | 1 |
| A6168 | 20.0 | 12.0 | 60.0 | 8.0 | 17.968 | O | 1 |
| A6169 | 15.0 | 17.0 | 60.0 | 8.0 | 16.464 | O | 1 |
| A6170 | 10.0 | 22.0 | 60.0 | 8.0 | 14.960 | O | 1 |
| A6171 | 9.0 | 23.0 | 60.0 | 8.0 | 14.659 | O | 1 |
| A6172 | 8.0 | 24.0 | 60.0 | 8.0 | 14.358 | O | 1 |
| A6173 | 7.0 | 25.0 | 60.0 | 8.0 | 14.057 | O | 1 |
| A6174 | 6.0 | 26.0 | 60.0 | 8.0 | 13.757 | O | 1 |
| A6175 | 5.0 | 27.0 | 60.0 | 8.0 | 13.413 | O | 1 |
| A6176 | 4.0 | 28.0 | 60.0 | 8.0 | 13.058 | O | 1 |
| A6177 | 3.0 | 29.0 | 60.0 | 8.0 | 12.703 | O | 1 |
| A6178 | 2.0 | 30.0 | 60.0 | 8.0 | 12.349 | O | 1 |
| A6179 | 1.0 | 31.0 | 60.0 | 8.0 | 11.994 | O | 1 |
| A6180 | 0.0 | 32.0 | 60.0 | 8.0 | 11.639 | O | 1 |
| A6181 | 25.0 | 2.0 | 65.0 | 8.0 | 19.222 | X | 1 |
| A6182 | 24.3 | 2.7 | 65.0 | 8.0 | 19.012 | X | 1 |
| A6183 | 24.2 | 2.8 | 65.0 | 8.0 | 18.982 | O | 1 |

[Table 338]

| | | | | | | | |
|---|---|---|---|---|---|---|---|
| A6184 | 24.0 | 3.0 | 65.0 | 8.0 | 18.922 | O | 1 |
| A6185 | 20.0 | 7.0 | 65.0 | 8.0 | 17.718 | O | 1 |
| A6186 | 15.0 | 12.0 | 65.0 | 8.0 | 16.214 | O | 1 |
| A6187 | 10.0 | 17.0 | 65.0 | 8.0 | 14.710 | O | 1 |
| A6188 | 9.0 | 18.0 | 65.0 | 8.0 | 14.409 | O | 1 |
| A6189 | 8.0 | 19.0 | 65.0 | 8.0 | 14.108 | O | 1 |
| A6190 | 7.0 | 20.0 | 65.0 | 8.0 | 13.808 | O | 1 |
| A6191 | 6.0 | 21.0 | 65.0 | 8.0 | 13.491 | O | 1 |
| A6192 | 5.0 | 22.0 | 65.0 | 8.0 | 13.137 | O | 1 |
| A6193 | 4.0 | 23.0 | 65.0 | 8.0 | 12.782 | O | 1 |
| A6194 | 3.0 | 24.0 | 65.0 | 8.0 | 12.427 | O | 1 |
| A6195 | 2.0 | 25.0 | 65.0 | 8.0 | 12.073 | O | 1 |
| A6196 | 1.0 | 26.0 | 65.0 | 8.0 | 11.718 | O | 1 |
| A6197 | 0.0 | 27.0 | 65.0 | 8.0 | 11.363 | O | 1 |
| A6198 | 16.0 | 69.0 | 5.0 | 10.0 | 19.189 | X | 1 |
| A6199 | 15.4 | 69.6 | 5.0 | 10.0 | 19.009 | X | 1 |
| A6200 | 15.3 | 69.7 | 5.0 | 10.0 | 18.979 | O | 1 |
| A6201 | 15.0 | 70.0 | 5.0 | 10.0 | 18.888 | O | 1 |
| A6202 | 10.0 | 75.0 | 5.0 | 10.0 | 17.384 | O | 1 |
| A6203 | 9.0 | 76.0 | 5.0 | 10.0 | 17.084 | O | 1 |
| A6204 | 8.0 | 77.0 | 5.0 | 10.0 | 16.783 | O | 1 |
| A6205 | 7.0 | 78.0 | 5.0 | 10.0 | 16.482 | O | 1 |
| A6206 | 6.0 | 79.0 | 5.0 | 10.0 | 16.181 | O | 1 |
| A6207 | 5.0 | 80.0 | 5.0 | 10.0 | 15.880 | O | 1 |
| A6208 | 4.0 | 81.0 | 5.0 | 10.0 | 15.579 | O | 1 |
| A6209 | 3.0 | 82.0 | 5.0 | 10.0 | 15.279 | O | 1 |
| A6210 | 2.0 | 83.0 | 5.0 | 10.0 | 14.978 | O | 1 |
| A6211 | 1.0 | 84.0 | 5.0 | 10.0 | 14.677 | O | 1 |
| A6212 | 0.0 | 85.0 | 5.0 | 10.0 | 14.350 | O | 1 |
| A6213 | 17.0 | 63.0 | 10.0 | 10.0 | 19.240 | X | 1 |
| A6214 | 16.2 | 63.8 | 10.0 | 10.0 | 19.000 | X | 1 |
| A6215 | 16.1 | 63.9 | 10.0 | 10.0 | 18.969 | O | 1 |
| A6216 | 16.0 | 64.0 | 10.0 | 10.0 | 18.939 | O | 1 |
| A6217 | 15.0 | 65.0 | 10.0 | 10.0 | 18.639 | O | 1 |
| A6218 | 10.0 | 70.0 | 10.0 | 10.0 | 17.134 | O | 1 |
| A6219 | 9.0 | 71.0 | 10.0 | 10.0 | 16.834 | O | 1 |
| A6220 | 8.0 | 72.0 | 10.0 | 10.0 | 16.533 | O | 1 |
| A6221 | 7.0 | 73.0 | 10.0 | 10.0 | 16.232 | O | 1 |
| A6222 | 6.0 | 74.0 | 10.0 | 10.0 | 15.931 | O | 1 |
| A6223 | 5.0 | 75.0 | 10.0 | 10.0 | 15.630 | O | 1 |
| A6224 | 4.0 | 76.0 | 10.0 | 10.0 | 15.329 | O | 1 |
| A6225 | 3.0 | 77.0 | 10.0 | 10.0 | 15.029 | O | 1 |
| A6226 | 2.0 | 78.0 | 10.0 | 10.0 | 14.728 | O | 1 |
| A6227 | 1.0 | 79.0 | 10.0 | 10.0 | 14.427 | O | 1 |
| A6228 | 0.0 | 80.0 | 10.0 | 10.0 | 14.074 | O | 1 |
| A6229 | 18.0 | 57.0 | 15.0 | 10.0 | 19.291 | X | 1 |
| A6230 | 17.1 | 57.9 | 15.0 | 10.0 | 19.020 | X | 1 |
| A6231 | 17.0 | 58.0 | 15.0 | 10.0 | 18.990 | O | 1 |
| A6232 | 15.0 | 60.0 | 15.0 | 10.0 | 18.389 | O | 1 |
| A6233 | 10.0 | 65.0 | 15.0 | 10.0 | 16.884 | O | 1 |

[Table 339]

| A6234 | 9.0 | 66.0 | 15.0 | 10.0 | 16.584 | O | 1 |
|---|---|---|---|---|---|---|---|
| A6235 | 8.0 | 67.0 | 15.0 | 10.0 | 16.283 | O | 1 |
| A6236 | 7.0 | 68.0 | 15.0 | 10.0 | 15.982 | O | 1 |
| A6237 | 6.0 | 69.0 | 15.0 | 10.0 | 15.681 | O | 1 |
| A6238 | 5.0 | 70.0 | 15.0 | 10.0 | 15.380 | O | 1 |
| A6239 | 4.0 | 71.0 | 15.0 | 10.0 | 15.079 | O | 1 |
| A6240 | 3.0 | 72.0 | 15.0 | 10.0 | 14.779 | O | 1 |
| A6241 | 2.0 | 73.0 | 15.0 | 10.0 | 14.478 | O | 1 |
| A6242 | 1.0 | 74.0 | 15.0 | 10.0 | 14.153 | O | 1 |
| A6243 | 0.0 | 75.0 | 15.0 | 10.0 | 13.798 | O | 1 |
| A6244 | 18.0 | 52.0 | 20.0 | 10.0 | 19.041 | X | 1 |
| A6245 | 17.9 | 52.1 | 20.0 | 10.0 | 19.011 | X | 1 |
| A6246 | 17.8 | 52.2 | 20.0 | 10.0 | 18.981 | O | 1 |
| A6247 | 17.0 | 53.0 | 20.0 | 10.0 | 18.740 | O | 1 |
| A6248 | 15.0 | 55.0 | 20.0 | 10.0 | 18.139 | O | 1 |
| A6249 | 10.0 | 60.0 | 20.0 | 10.0 | 16.635 | O | 1 |
| A6250 | 9.0 | 61.0 | 20.0 | 10.0 | 16.334 | O | 1 |
| A6251 | 8.0 | 62.0 | 20.0 | 10.0 | 16.033 | O | 1 |
| A6252 | 7.0 | 63.0 | 20.0 | 10.0 | 15.732 | O | 1 |
| A6253 | 6.0 | 64.0 | 20.0 | 10.0 | 15.431 | O | 1 |
| A6254 | 5.0 | 65.0 | 20.0 | 10.0 | 15.130 | O | 1 |
| A6255 | 4.0 | 66.0 | 20.0 | 10.0 | 14.830 | O | 1 |
| A6256 | 3.0 | 67.0 | 20.0 | 10.0 | 14.529 | O | 1 |
| A6257 | 2.0 | 68.0 | 20.0 | 10.0 | 14.228 | O | 1 |
| A6258 | 1.0 | 69.0 | 20.0 | 10.0 | 13.877 | O | 1 |
| A6259 | 0.0 | 70.0 | 20.0 | 10.0 | 13.522 | O | 1 |
| A6260 | 19.0 | 46.0 | 25.0 | 10.0 | 19.092 | X | 1 |
| A6261 | 18.7 | 46.3 | 25.0 | 10.0 | 19.002 | X | 1 |
| A6262 | 18.6 | 46.4 | 25.0 | 10.0 | 18.972 | O | 1 |
| A6263 | 18.0 | 47.0 | 25.0 | 10.0 | 18.791 | O | 1 |
| A6264 | 15.0 | 50.0 | 25.0 | 10.0 | 17.889 | O | 1 |
| A6265 | 10.0 | 55.0 | 25.0 | 10.0 | 16.385 | O | 1 |
| A6266 | 9.0 | 56.0 | 25.0 | 10.0 | 16.084 | O | 1 |
| A6267 | 8.0 | 57.0 | 25.0 | 10.0 | 15.783 | O | 1 |
| A6268 | 7.0 | 58.0 | 25.0 | 10.0 | 15.482 | O | 1 |
| A6269 | 6.0 | 59.0 | 25.0 | 10.0 | 15.181 | O | 1 |
| A6270 | 5.0 | 60.0 | 25.0 | 10.0 | 14.880 | O | 1 |
| A6271 | 4.0 | 61.0 | 25.0 | 10.0 | 14.580 | O | 1 |
| A6272 | 3.0 | 62.0 | 25.0 | 10.0 | 14.279 | O | 1 |
| A6273 | 2.0 | 63.0 | 25.0 | 10.0 | 13.955 | O | 1 |
| A6274 | 1.0 | 64.0 | 25.0 | 10.0 | 13.601 | O | 1 |
| A6275 | 0.0 | 65.0 | 25.0 | 10.0 | 13.246 | O | 1 |
| A6276 | 20.0 | 40.0 | 30.0 | 10.0 | 19.143 | X | 1 |
| A6277 | 19.6 | 40.4 | 30.0 | 10.0 | 19.023 | X | 1 |
| A6278 | 19.5 | 40.5 | 30.0 | 10.0 | 18.993 | O | 1 |
| A6279 | 19.0 | 41.0 | 30.0 | 10.0 | 18.842 | O | 1 |
| A6280 | 15.0 | 45.0 | 30.0 | 10.0 | 17.639 | O | 1 |
| A6281 | 10.0 | 50.0 | 30.0 | 10.0 | 16.135 | O | 1 |
| A6282 | 9.0 | 51.0 | 30.0 | 10.0 | 15.834 | O | 1 |
| A6283 | 8.0 | 52.0 | 30.0 | 10.0 | 15.533 | O | 1 |

[Table 340]

| | | | | | | | |
|---|---|---|---|---|---|---|---|
| A6284 | 7.0 | 53.0 | 30.0 | 10.0 | 15.232 | O | 1 |
| A6285 | 6.0 | 54.0 | 30.0 | 10.0 | 14.931 | O | 1 |
| A6286 | 5.0 | 55.0 | 30.0 | 10.0 | 14.630 | O | 1 |
| A6287 | 4.0 | 56.0 | 30.0 | 10.0 | 14.330 | O | 1 |
| A6288 | 3.0 | 57.0 | 30.0 | 10.0 | 14.029 | O | 1 |
| A6289 | 2.0 | 58.0 | 30.0 | 10.0 | 13.679 | O | 1 |
| A6290 | 1.0 | 59.0 | 30.0 | 10.0 | 13.325 | O | 1 |
| A6291 | 0.0 | 60.0 | 30.0 | 10.0 | 12.970 | O | 1 |
| A6292 | 21.0 | 34.0 | 35.0 | 10.0 | 19.194 | X | 1 |
| A6293 | 20.4 | 34.6 | 35.0 | 10.0 | 19.013 | X | 1 |
| A6294 | 20.3 | 34.7 | 35.0 | 10.0 | 18.983 | O | 1 |
| A6295 | 20.0 | 35.0 | 35.0 | 10.0 | 18.893 | O | 1 |
| A6296 | 15.0 | 40.0 | 35.0 | 10.0 | 17.389 | O | 1 |
| A6297 | 10.0 | 45.0 | 35.0 | 10.0 | 15.885 | O | 1 |
| A6298 | 9.0 | 46.0 | 35.0 | 10.0 | 15.584 | O | 1 |
| A6299 | 8.0 | 47.0 | 35.0 | 10.0 | 15.283 | O | 1 |
| A6300 | 7.0 | 48.0 | 35.0 | 10.0 | 14.982 | O | 1 |
| A6301 | 6.0 | 49.0 | 35.0 | 10.0 | 14.681 | O | 1 |
| A6302 | 5.0 | 50.0 | 35.0 | 10.0 | 14.381 | O | 1 |
| A6303 | 4.0 | 51.0 | 35.0 | 10.0 | 14.080 | O | 1 |
| A6304 | 3.0 | 52.0 | 35.0 | 10.0 | 13.758 | O | 1 |
| A6305 | 2.0 | 53.0 | 35.0 | 10.0 | 13.404 | O | 1 |
| A6306 | 1.0 | 54.0 | 35.0 | 10.0 | 13.049 | O | 1 |
| A6307 | 0.0 | 55.0 | 35.0 | 10.0 | 12.694 | O | 1 |
| A6308 | 22.0 | 28.0 | 40.0 | 10.0 | 19.245 | X | 1 |
| A6309 | 21.2 | 28.8 | 40.0 | 10.0 | 19.004 | X | 1 |
| A6310 | 21.1 | 28.9 | 40.0 | 10.0 | 18.974 | O | 1 |
| A6311 | 21.0 | 29.0 | 40.0 | 10.0 | 18.944 | O | 1 |
| A6312 | 15.0 | 35.0 | 40.0 | 10.0 | 17.139 | O | 1 |
| A6313 | 10.0 | 40.0 | 40.0 | 10.0 | 15.635 | O | 1 |
| A6314 | 9.0 | 41.0 | 40.0 | 10.0 | 15.334 | O | 1 |
| A6315 | 8.0 | 42.0 | 40.0 | 10.0 | 15.033 | O | 1 |
| A6316 | 7.0 | 43.0 | 40.0 | 10.0 | 14.732 | O | 1 |
| A6317 | 6.0 | 44.0 | 40.0 | 10.0 | 14.431 | O | 1 |
| A6318 | 5.0 | 45.0 | 40.0 | 10.0 | 14.131 | O | 1 |
| A6319 | 4.0 | 46.0 | 40.0 | 10.0 | 13.830 | O | 1 |
| A6320 | 3.0 | 47.0 | 40.0 | 10.0 | 13.482 | O | 1 |
| A6321 | 2.0 | 48.0 | 40.0 | 10.0 | 13.128 | O | 1 |
| A6322 | 1.0 | 49.0 | 40.0 | 10.0 | 12.773 | O | 1 |
| A6323 | 0.0 | 50.0 | 40.0 | 10.0 | 12.418 | O | 1 |
| A6324 | 23.0 | 22.0 | 45.0 | 10.0 | 19.296 | X | 1 |
| A6325 | 22.1 | 22.9 | 45.0 | 10.0 | 19.025 | X | 1 |
| A6326 | 22.0 | 23.0 | 45.0 | 10.0 | 18.995 | O | 1 |
| A6327 | 20.0 | 25.0 | 45.0 | 10.0 | 18.393 | O | 1 |
| A6328 | 15.0 | 30.0 | 45.0 | 10.0 | 16.889 | O | 1 |
| A6329 | 10.0 | 35.0 | 45.0 | 10.0 | 15.385 | O | 1 |
| A6330 | 9.0 | 36.0 | 45.0 | 10.0 | 15.084 | O | 1 |
| A6331 | 8.0 | 37.0 | 45.0 | 10.0 | 14.783 | O | 1 |
| A6332 | 7.0 | 38.0 | 45.0 | 10.0 | 14.482 | O | 1 |
| A6333 | 6.0 | 39.0 | 45.0 | 10.0 | 14.181 | O | 1 |

[Table 341]

| A6334 | 5.0 | 40.0 | 45.0 | 10.0 | 13.881 | O | 1 |
|---|---|---|---|---|---|---|---|
| A6335 | 4.0 | 41.0 | 45.0 | 10.0 | 13.561 | O | 1 |
| A6336 | 3.0 | 42.0 | 45.0 | 10.0 | 13.206 | O | 1 |
| A6337 | 2.0 | 43.0 | 45.0 | 10.0 | 12.852 | O | 1 |
| A6338 | 1.0 | 44.0 | 45.0 | 10.0 | 12.497 | O | 1 |
| A6339 | 0.0 | 45.0 | 45.0 | 10.0 | 12.142 | O | 1 |
| A6340 | 23.0 | 17.0 | 50.0 | 10.0 | 19.046 | X | 1 |
| A6341 | 22.9 | 17.1 | 50.0 | 10.0 | 19.016 | X | 1 |
| A6342 | 22.8 | 17.2 | 50.0 | 10.0 | 18.985 | O | 1 |
| A6343 | 22.0 | 18.0 | 50.0 | 10.0 | 18.745 | O | 1 |
| A6344 | 20.0 | 20.0 | 50.0 | 10.0 | 18.143 | O | 1 |
| A6345 | 15.0 | 25.0 | 50.0 | 10.0 | 16.639 | O | 1 |
| A6346 | 10.0 | 30.0 | 50.0 | 10.0 | 15.135 | O | 1 |
| A6347 | 9.0 | 31.0 | 50.0 | 10.0 | 14.834 | O | 1 |
| A6348 | 8.0 | 32.0 | 50.0 | 10.0 | 14.533 | O | 1 |
| A6349 | 7.0 | 33.0 | 50.0 | 10.0 | 14.232 | O | 1 |
| A6350 | 6.0 | 34.0 | 50.0 | 10.0 | 13.932 | O | 1 |
| A6351 | 5.0 | 35.0 | 50.0 | 10.0 | 13.631 | O | 1 |
| A6352 | 4.0 | 36.0 | 50.0 | 10.0 | 13.285 | O | 1 |
| A6353 | 3.0 | 37.0 | 50.0 | 10.0 | 12.930 | O | 1 |
| A6354 | 2.0 | 38.0 | 50.0 | 10.0 | 12.576 | O | 1 |
| A6355 | 1.0 | 39.0 | 50.0 | 10.0 | 12.221 | O | 1 |
| A6356 | 0.0 | 40.0 | 50.0 | 10.0 | 11.866 | O | 1 |
| A6357 | 24.0 | 11.0 | 55.0 | 10.0 | 19.097 | X | 1 |
| A6358 | 23.7 | 11.3 | 55.0 | 10.0 | 19.006 | X | 1 |
| A6359 | 23.6 | 11.4 | 55.0 | 10.0 | 18.976 | O | 1 |
| A6360 | 23.0 | 12.0 | 55.0 | 10.0 | 18.796 | O | 1 |
| A6361 | 20.0 | 15.0 | 55.0 | 10.0 | 17.893 | O | 1 |
| A6362 | 15.0 | 20.0 | 55.0 | 10.0 | 16.389 | O | 1 |
| A6363 | 10.0 | 25.0 | 55.0 | 10.0 | 14.885 | O | 1 |
| A6364 | 9.0 | 26.0 | 55.0 | 10.0 | 14.584 | O | 1 |
| A6365 | 8.0 | 27.0 | 55.0 | 10.0 | 14.283 | O | 1 |
| A6366 | 7.0 | 28.0 | 55.0 | 10.0 | 13.982 | O | 1 |
| A6367 | 6.0 | 29.0 | 55.0 | 10.0 | 13.682 | O | 1 |
| A6368 | 5.0 | 30.0 | 55.0 | 10.0 | 13.364 | O | 1 |
| A6369 | 4.0 | 31.0 | 55.0 | 10.0 | 13.009 | O | 1 |
| A6370 | 3.0 | 32.0 | 55.0 | 10.0 | 12.654 | O | 1 |
| A6371 | 2.0 | 33.0 | 55.0 | 10.0 | 12.300 | O | 1 |
| A6372 | 1.0 | 34.0 | 55.0 | 10.0 | 11.945 | O | 1 |
| A6373 | 0.0 | 35.0 | 55.0 | 10.0 | 11.590 | O | 1 |
| A6374 | 25.0 | 5.0 | 60.0 | 10.0 | 19.147 | X | 1 |
| A6375 | 24.6 | 5.4 | 60.0 | 10.0 | 19.027 | X | 1 |
| A6376 | 24.5 | 5.5 | 60.0 | 10.0 | 18.997 | O | 1 |
| A6377 | 24.0 | 6.0 | 60.0 | 10.0 | 18.847 | O | 1 |
| A6378 | 20.0 | 10.0 | 60.0 | 10.0 | 17.643 | O | 1 |
| A6379 | 15.0 | 15.0 | 60.0 | 10.0 | 16.139 | O | 1 |
| A6380 | 10.0 | 20.0 | 60.0 | 10.0 | 14.635 | O | 1 |
| A6381 | 9.0 | 21.0 | 60.0 | 10.0 | 14.334 | O | 1 |
| A6382 | 8.0 | 22.0 | 60.0 | 10.0 | 14.033 | O | 1 |
| A6383 | 7.0 | 23.0 | 60.0 | 10.0 | 13.732 | O | 1 |

[Table 342]

| A6384 | 6.0 | 24.0 | 60.0 | 10.0 | 13.432 | O | 1 |
|-------|-----|------|------|------|--------|---|---|
| A6385 | 5.0 | 25.0 | 60.0 | 10.0 | 13.088 | O | 1 |
| A6386 | 4.0 | 26.0 | 60.0 | 10.0 | 12.733 | O | 1 |
| A6387 | 3.0 | 27.0 | 60.0 | 10.0 | 12.378 | O | 1 |
| A6388 | 2.0 | 28.0 | 60.0 | 10.0 | 12.024 | O | 1 |
| A6389 | 1.0 | 29.0 | 60.0 | 10.0 | 11.669 | O | 1 |
| A6390 | 0.0 | 30.0 | 60.0 | 10.0 | 11.314 | O | 1 |

Tables 343 to 358 show the composition, combustion heat amount, and GWP of the working medium of a four-component system of propane, HFO-1132(E), HFO-1234yf, and CF$_3$I.

[Table 343]

| Case | propane | HFO-1132(E) | HFO-1234yf | $CF_3I$ | Heat of Combustion | Evaluation | GWP |
|------|---------|-------------|------------|---------|--------------------|------------|-----|
| A6391 | 13.0 | 77.0 | 5.0 | 5.0 | 19.166 | X | 1 |
| A6392 | 12.5 | 77.5 | 5.0 | 5.0 | 19.016 | X | 1 |
| A6393 | 12.4 | 77.6 | 5.0 | 5.0 | 18.985 | O | 1 |
| A6394 | 12.0 | 78.0 | 5.0 | 5.0 | 18.865 | O | 1 |
| A6395 | 10.0 | 80.0 | 5.0 | 5.0 | 18.263 | O | 1 |
| A6396 | 9.0 | 81.0 | 5.0 | 5.0 | 17.963 | O | 1 |
| A6397 | 8.0 | 82.0 | 5.0 | 5.0 | 17.662 | O | 1 |
| A6398 | 7.0 | 83.0 | 5.0 | 5.0 | 17.361 | O | 1 |
| A6399 | 6.0 | 84.0 | 5.0 | 5.0 | 17.060 | O | 1 |
| A6400 | 5.0 | 85.0 | 5.0 | 5.0 | 16.759 | O | 1 |
| A6401 | 4.0 | 86.0 | 5.0 | 5.0 | 16.458 | O | 1 |
| A6402 | 3.0 | 87.0 | 5.0 | 5.0 | 16.158 | O | 1 |
| A6403 | 2.0 | 88.0 | 5.0 | 5.0 | 15.857 | O | 1 |
| A6404 | 1.0 | 89.0 | 5.0 | 5.0 | 15.556 | O | 1 |
| A6405 | 0.0 | 90.0 | 5.0 | 5.0 | 15.206 | O | 1 |
| A6406 | 14.0 | 71.0 | 10.0 | 5.0 | 19.217 | X | 1 |
| A6407 | 13.4 | 71.6 | 10.0 | 5.0 | 19.036 | X | 1 |
| A6408 | 13.2 | 71.8 | 10.0 | 5.0 | 18.976 | O | 1 |
| A6409 | 13.0 | 72.0 | 10.0 | 5.0 | 18.916 | O | 1 |
| A6410 | 10.0 | 75.0 | 10.0 | 5.0 | 18.013 | O | 1 |
| A6411 | 9.0 | 76.0 | 10.0 | 5.0 | 17.713 | O | 1 |
| A6412 | 8.0 | 77.0 | 10.0 | 5.0 | 17.412 | O | 1 |
| A6413 | 7.0 | 78.0 | 10.0 | 5.0 | 17.111 | O | 1 |
| A6414 | 6.0 | 79.0 | 10.0 | 5.0 | 16.810 | O | 1 |
| A6415 | 5.0 | 80.0 | 10.0 | 5.0 | 16.509 | O | 1 |
| A6416 | 4.0 | 81.0 | 10.0 | 5.0 | 16.209 | O | 1 |
| A6417 | 3.0 | 82.0 | 10.0 | 5.0 | 15.908 | O | 1 |
| A6418 | 2.0 | 83.0 | 10.0 | 5.0 | 15.607 | O | 1 |
| A6419 | 1.0 | 84.0 | 10.0 | 5.0 | 15.285 | O | 1 |
| A6420 | 0.0 | 85.0 | 10.0 | 5.0 | 14.930 | O | 1 |
| A6421 | 15.0 | 65.0 | 15.0 | 5.0 | 19.268 | X | 1 |
| A6422 | 14.2 | 65.8 | 15.0 | 5.0 | 19.027 | X | 1 |
| A6423 | 14.1 | 65.9 | 15.0 | 5.0 | 18.997 | O | 1 |
| A6424 | 14.0 | 66.0 | 15.0 | 5.0 | 18.967 | O | 1 |
| A6425 | 10.0 | 70.0 | 15.0 | 5.0 | 17.764 | O | 1 |
| A6426 | 9.0 | 71.0 | 15.0 | 5.0 | 17.463 | O | 1 |
| A6427 | 8.0 | 72.0 | 15.0 | 5.0 | 17.162 | O | 1 |
| A6428 | 7.0 | 73.0 | 15.0 | 5.0 | 16.861 | O | 1 |
| A6429 | 6.0 | 74.0 | 15.0 | 5.0 | 16.560 | O | 1 |
| A6430 | 5.0 | 75.0 | 15.0 | 5.0 | 16.259 | O | 1 |
| A6431 | 4.0 | 76.0 | 15.0 | 5.0 | 15.959 | O | 1 |
| A6432 | 3.0 | 77.0 | 15.0 | 5.0 | 15.658 | O | 1 |
| A6433 | 2.0 | 78.0 | 15.0 | 5.0 | 15.357 | O | 1 |
| A6434 | 1.0 | 79.0 | 15.0 | 5.0 | 15.009 | O | 1 |
| A6435 | 0.0 | 80.0 | 15.0 | 5.0 | 14.654 | O | 1 |
| A6436 | 15.0 | 60.0 | 20.0 | 5.0 | 19.018 | X | 1 |
| A6437 | 14.9 | 60.1 | 20.0 | 5.0 | 18.988 | O | 1 |
| A6438 | 14.0 | 61.0 | 20.0 | 5.0 | 18.717 | O | 1 |
| A6439 | 10.0 | 65.0 | 20.0 | 5.0 | 17.514 | O | 1 |
| A6440 | 9.0 | 66.0 | 20.0 | 5.0 | 17.213 | O | 1 |

[Table 344]

| A6441 | 8.0 | 67.0 | 20.0 | 5.0 | 16.912 | O | 1 |
|---|---|---|---|---|---|---|---|
| A6442 | 7.0 | 68.0 | 20.0 | 5.0 | 16.611 | O | 1 |
| A6443 | 6.0 | 69.0 | 20.0 | 5.0 | 16.310 | O | 1 |
| A6444 | 5.0 | 70.0 | 20.0 | 5.0 | 16.009 | O | 1 |
| A6445 | 4.0 | 71.0 | 20.0 | 5.0 | 15.709 | O | 1 |
| A6446 | 3.0 | 72.0 | 20.0 | 5.0 | 15.408 | O | 1 |
| A6447 | 2.0 | 73.0 | 20.0 | 5.0 | 15.088 | O | 1 |
| A6448 | 1.0 | 74.0 | 20.0 | 5.0 | 14.733 | O | 1 |
| A6449 | 0.0 | 75.0 | 20.0 | 5.0 | 14.378 | O | 1 |
| A6450 | 16.0 | 54.0 | 25.0 | 5.0 | 19.069 | X | 1 |
| A6451 | 15.8 | 54.2 | 25.0 | 5.0 | 19.008 | X | 1 |
| A6452 | 15.7 | 54.3 | 25.0 | 5.0 | 18.978 | O | 1 |
| A6453 | 15.0 | 55.0 | 25.0 | 5.0 | 18.768 | O | 1 |
| A6454 | 10.0 | 60.0 | 25.0 | 5.0 | 17.264 | O | 1 |
| A6455 | 9.0 | 61.0 | 25.0 | 5.0 | 16.963 | O | 1 |
| A6456 | 8.0 | 62.0 | 25.0 | 5.0 | 16.662 | O | 1 |
| A6457 | 7.0 | 63.0 | 25.0 | 5.0 | 16.361 | O | 1 |
| A6458 | 6.0 | 64.0 | 25.0 | 5.0 | 16.060 | O | 1 |
| A6459 | 5.0 | 65.0 | 25.0 | 5.0 | 15.760 | O | 1 |
| A6460 | 4.0 | 66.0 | 25.0 | 5.0 | 15.459 | O | 1 |
| A6461 | 3.0 | 67.0 | 25.0 | 5.0 | 15.158 | O | 1 |
| A6462 | 2.0 | 68.0 | 25.0 | 5.0 | 14.812 | O | 1 |
| A6463 | 1.0 | 69.0 | 25.0 | 5.0 | 14.457 | O | 1 |
| A6464 | 0.0 | 70.0 | 25.0 | 5.0 | 14.102 | O | 1 |
| A6465 | 17.0 | 48.0 | 30.0 | 5.0 | 19.120 | X | 1 |
| A6466 | 16.7 | 48.3 | 30.0 | 5.0 | 19.029 | X | 1 |
| A6467 | 16.6 | 48.4 | 30.0 | 5.0 | 18.999 | O | 1 |
| A6468 | 16.0 | 49.0 | 30.0 | 5.0 | 18.819 | O | 1 |
| A6469 | 15.0 | 50.0 | 30.0 | 5.0 | 18.518 | O | 1 |
| A6470 | 10.0 | 55.0 | 30.0 | 5.0 | 17.014 | O | 1 |
| A6471 | 9.0 | 56.0 | 30.0 | 5.0 | 16.713 | O | 1 |
| A6472 | 8.0 | 57.0 | 30.0 | 5.0 | 16.412 | O | 1 |
| A6473 | 7.0 | 58.0 | 30.0 | 5.0 | 16.111 | O | 1 |
| A6474 | 6.0 | 59.0 | 30.0 | 5.0 | 15.810 | O | 1 |
| A6475 | 5.0 | 60.0 | 30.0 | 5.0 | 15.510 | O | 1 |
| A6476 | 4.0 | 61.0 | 30.0 | 5.0 | 15.209 | O | 1 |
| A6477 | 3.0 | 62.0 | 30.0 | 5.0 | 14.891 | O | 1 |
| A6478 | 2.0 | 63.0 | 30.0 | 5.0 | 14.536 | O | 1 |
| A6479 | 1.0 | 64.0 | 30.0 | 5.0 | 14.181 | O | 1 |
| A6480 | 0.0 | 65.0 | 30.0 | 5.0 | 13.826 | O | 1 |
| A6481 | 18.0 | 42.0 | 35.0 | 5.0 | 19.170 | X | 1 |
| A6482 | 17.5 | 42.5 | 35.0 | 5.0 | 19.020 | X | 1 |
| A6483 | 17.4 | 42.6 | 35.0 | 5.0 | 18.990 | O | 1 |
| A6484 | 17.0 | 43.0 | 35.0 | 5.0 | 18.870 | O | 1 |
| A6485 | 15.0 | 45.0 | 35.0 | 5.0 | 18.268 | O | 1 |
| A6486 | 10.0 | 50.0 | 35.0 | 5.0 | 16.764 | O | 1 |
| A6487 | 9.0 | 51.0 | 35.0 | 5.0 | 16.463 | O | 1 |
| A6488 | 8.0 | 52.0 | 35.0 | 5.0 | 16.162 | O | 1 |
| A6489 | 7.0 | 53.0 | 35.0 | 5.0 | 15.861 | O | 1 |
| A6490 | 6.0 | 54.0 | 35.0 | 5.0 | 15.560 | O | 1 |

[Table 345]

| | | | | | | | |
|---|---|---|---|---|---|---|---|
| A6491 | 5.0 | 55.0 | 35.0 | 5.0 | 15.260 | O | 1 |
| A6492 | 4.0 | 56.0 | 35.0 | 5.0 | 14.959 | O | 1 |
| A6493 | 3.0 | 57.0 | 35.0 | 5.0 | 14.615 | O | 1 |
| A6494 | 2.0 | 58.0 | 35.0 | 5.0 | 14.260 | O | 1 |
| A6495 | 1.0 | 59.0 | 35.0 | 5.0 | 13.905 | O | 1 |
| A6496 | 0.0 | 60.0 | 35.0 | 5.0 | 13.550 | O | 1 |
| A6497 | 19.0 | 36.0 | 40.0 | 5.0 | 19.221 | X | 1 |
| A6498 | 18.3 | 36.7 | 40.0 | 5.0 | 19.011 | X | 1 |
| A6499 | 18.2 | 36.8 | 40.0 | 5.0 | 18.981 | O | 1 |
| A6500 | 18.0 | 37.0 | 40.0 | 5.0 | 18.920 | O | 1 |
| A6501 | 15.0 | 40.0 | 40.0 | 5.0 | 18.018 | O | 1 |
| A6502 | 10.0 | 45.0 | 40.0 | 5.0 | 16.514 | O | 1 |
| A6503 | 9.0 | 46.0 | 40.0 | 5.0 | 16.213 | O | 1 |
| A6504 | 8.0 | 47.0 | 40.0 | 5.0 | 15.912 | O | 1 |
| A6505 | 7.0 | 48.0 | 40.0 | 5.0 | 15.611 | O | 1 |
| A6506 | 6.0 | 49.0 | 40.0 | 5.0 | 15.311 | O | 1 |
| A6507 | 5.0 | 50.0 | 40.0 | 5.0 | 15.010 | O | 1 |
| A6508 | 4.0 | 51.0 | 40.0 | 5.0 | 14.693 | O | 1 |
| A6509 | 3.0 | 52.0 | 40.0 | 5.0 | 14.339 | O | 1 |
| A6510 | 2.0 | 53.0 | 40.0 | 5.0 | 13.984 | O | 1 |
| A6511 | 1.0 | 54.0 | 40.0 | 5.0 | 13.629 | O | 1 |
| A6512 | 0.0 | 55.0 | 40.0 | 5.0 | 13.275 | O | 1 |
| A6513 | 20.0 | 30.0 | 45.0 | 5.0 | 19.272 | X | 1 |
| A6514 | 19.1 | 30.9 | 45.0 | 5.0 | 19.001 | X | 1 |
| A6515 | 19.0 | 31.0 | 45.0 | 5.0 | 18.971 | O | 1 |
| A6516 | 15.0 | 35.0 | 45.0 | 5.0 | 17.768 | O | 1 |
| A6517 | 10.0 | 40.0 | 45.0 | 5.0 | 16.264 | O | 1 |
| A6518 | 9.0 | 41.0 | 45.0 | 5.0 | 15.963 | O | 1 |
| A6519 | 8.0 | 42.0 | 45.0 | 5.0 | 15.662 | O | 1 |
| A6520 | 7.0 | 43.0 | 45.0 | 5.0 | 15.361 | O | 1 |
| A6521 | 6.0 | 44.0 | 45.0 | 5.0 | 15.061 | O | 1 |
| A6522 | 5.0 | 45.0 | 45.0 | 5.0 | 14.760 | O | 1 |
| A6523 | 4.0 | 46.0 | 45.0 | 5.0 | 14.417 | O | 1 |
| A6524 | 3.0 | 47.0 | 45.0 | 5.0 | 14.063 | O | 1 |
| A6525 | 2.0 | 48.0 | 45.0 | 5.0 | 13.708 | O | 1 |
| A6526 | 1.0 | 49.0 | 45.0 | 5.0 | 13.353 | O | 1 |
| A6527 | 0.0 | 50.0 | 45.0 | 5.0 | 12.999 | O | 1 |
| A6528 | 20.0 | 25.0 | 50.0 | 5.0 | 19.022 | X | 1 |
| A6529 | 19.9 | 25.1 | 50.0 | 5.0 | 18.992 | O | 1 |
| A6530 | 19.0 | 26.0 | 50.0 | 5.0 | 18.721 | O | 1 |
| A6531 | 15.0 | 30.0 | 50.0 | 5.0 | 17.518 | O | 1 |
| A6532 | 10.0 | 35.0 | 50.0 | 5.0 | 16.014 | O | 1 |
| A6533 | 9.0 | 36.0 | 50.0 | 5.0 | 15.713 | O | 1 |
| A6534 | 8.0 | 37.0 | 50.0 | 5.0 | 15.412 | O | 1 |
| A6535 | 7.0 | 38.0 | 50.0 | 5.0 | 15.111 | O | 1 |
| A6536 | 6.0 | 39.0 | 50.0 | 5.0 | 14.811 | O | 1 |
| A6537 | 5.0 | 40.0 | 50.0 | 5.0 | 14.496 | O | 1 |
| A6538 | 4.0 | 41.0 | 50.0 | 5.0 | 14.141 | O | 1 |
| A6539 | 3.0 | 42.0 | 50.0 | 5.0 | 13.787 | O | 1 |
| A6540 | 2.0 | 43.0 | 50.0 | 5.0 | 13.432 | O | 1 |

[Table 346]

| | | | | | | | |
|---|---|---|---|---|---|---|---|
| A6541 | 1.0 | 44.0 | 50.0 | 5.0 | 13.077 | O | 1 |
| A6542 | 0.0 | 45.0 | 50.0 | 5.0 | 12.723 | O | 1 |
| A6543 | 21.0 | 19.0 | 55.0 | 5.0 | 19.073 | X | 1 |
| A6544 | 20.8 | 19.2 | 55.0 | 5.0 | 19.013 | X | 1 |
| A6545 | 20.7 | 19.3 | 55.0 | 5.0 | 18.983 | O | 1 |
| A6546 | 20.0 | 20.0 | 55.0 | 5.0 | 18.772 | O | 1 |
| A6547 | 15.0 | 25.0 | 55.0 | 5.0 | 17.268 | O | 1 |
| A6548 | 10.0 | 30.0 | 55.0 | 5.0 | 15.764 | O | 1 |
| A6549 | 9.0 | 31.0 | 55.0 | 5.0 | 15.463 | O | 1 |
| A6550 | 8.0 | 32.0 | 55.0 | 5.0 | 15.162 | O | 1 |
| A6551 | 7.0 | 33.0 | 55.0 | 5.0 | 14.861 | O | 1 |
| A6552 | 6.0 | 34.0 | 55.0 | 5.0 | 14.561 | O | 1 |
| A6553 | 5.0 | 35.0 | 55.0 | 5.0 | 14.220 | O | 1 |
| A6554 | 4.0 | 36.0 | 55.0 | 5.0 | 13.865 | O | 1 |
| A6555 | 3.0 | 37.0 | 55.0 | 5.0 | 13.511 | O | 1 |
| A6556 | 2.0 | 38.0 | 55.0 | 5.0 | 13.156 | O | 1 |
| A6557 | 1.0 | 39.0 | 55.0 | 5.0 | 12.801 | O | 1 |
| A6558 | 0.0 | 40.0 | 55.0 | 5.0 | 12.447 | O | 1 |
| A6559 | 22.0 | 13.0 | 60.0 | 5.0 | 19.124 | X | 1 |
| A6560 | 21.6 | 13.4 | 60.0 | 5.0 | 19.004 | X | 1 |
| A6561 | 21.5 | 13.5 | 60.0 | 5.0 | 18.974 | O | 1 |
| A6562 | 21.0 | 14.0 | 60.0 | 5.0 | 18.823 | O | 1 |
| A6563 | 20.0 | 15.0 | 60.0 | 5.0 | 18.522 | O | 1 |
| A6564 | 15.0 | 20.0 | 60.0 | 5.0 | 17.018 | O | 1 |
| A6565 | 10.0 | 25.0 | 60.0 | 5.0 | 15.514 | O | 1 |
| A6566 | 9.0 | 26.0 | 60.0 | 5.0 | 15.213 | O | 1 |
| A6567 | 8.0 | 27.0 | 60.0 | 5.0 | 14.912 | O | 1 |
| A6568 | 7.0 | 28.0 | 60.0 | 5.0 | 14.612 | O | 1 |
| A6569 | 6.0 | 29.0 | 60.0 | 5.0 | 14.299 | O | 1 |
| A6570 | 5.0 | 30.0 | 60.0 | 5.0 | 13.944 | O | 1 |
| A6571 | 4.0 | 31.0 | 60.0 | 5.0 | 13.589 | O | 1 |
| A6572 | 3.0 | 32.0 | 60.0 | 5.0 | 13.235 | O | 1 |
| A6573 | 2.0 | 33.0 | 60.0 | 5.0 | 12.880 | O | 1 |
| A6574 | 1.0 | 34.0 | 60.0 | 5.0 | 12.525 | O | 1 |
| A6575 | 0.0 | 35.0 | 60.0 | 5.0 | 12.171 | O | 1 |
| A6576 | 23.0 | 7.0 | 65.0 | 5.0 | 19.175 | X | 1 |
| A6577 | 22.5 | 7.5 | 65.0 | 5.0 | 19.024 | X | 1 |
| A6578 | 22.4 | 7.6 | 65.0 | 5.0 | 18.994 | O | 1 |
| A6579 | 22.0 | 8.0 | 65.0 | 5.0 | 18.874 | O | 1 |
| A6580 | 20.0 | 10.0 | 65.0 | 5.0 | 18.272 | O | 1 |
| A6581 | 15.0 | 15.0 | 65.0 | 5.0 | 16.768 | O | 1 |
| A6582 | 10.0 | 20.0 | 65.0 | 5.0 | 15.264 | O | 1 |
| A6583 | 9.0 | 21.0 | 65.0 | 5.0 | 14.963 | O | 1 |
| A6584 | 8.0 | 22.0 | 65.0 | 5.0 | 14.662 | O | 1 |
| A6585 | 7.0 | 23.0 | 65.0 | 5.0 | 14.362 | O | 1 |
| A6586 | 6.0 | 24.0 | 65.0 | 5.0 | 14.023 | O | 1 |
| A6587 | 5.0 | 25.0 | 65.0 | 5.0 | 13.668 | O | 1 |
| A6588 | 4.0 | 26.0 | 65.0 | 5.0 | 13.313 | O | 1 |
| A6589 | 3.0 | 27.0 | 65.0 | 5.0 | 12.959 | O | 1 |
| A6590 | 2.0 | 28.0 | 65.0 | 5.0 | 12.604 | O | 1 |

[Table 347]

| | | | | | | | |
|---|---|---|---|---|---|---|---|
| A6591 | 1.0 | 29.0 | 65.0 | 5.0 | 12.249 | O | 1 |
| A6592 | 0.0 | 30.0 | 65.0 | 5.0 | 11.895 | O | 1 |
| A6593 | 15.0 | 70.0 | 5.0 | 10.0 | 19.022 | X | 1 |
| A6594 | 14.9 | 70.1 | 5.0 | 10.0 | 18.991 | O | 1 |
| A6595 | 14.0 | 71.0 | 5.0 | 10.0 | 18.721 | O | 1 |
| A6596 | 10.0 | 75.0 | 5.0 | 10.0 | 17.517 | O | 1 |
| A6597 | 9.0 | 76.0 | 5.0 | 10.0 | 17.217 | O | 1 |
| A6598 | 8.0 | 77.0 | 5.0 | 10.0 | 16.916 | O | 1 |
| A6599 | 7.0 | 78.0 | 5.0 | 10.0 | 16.615 | O | 1 |
| A6600 | 6.0 | 79.0 | 5.0 | 10.0 | 16.314 | O | 1 |
| A6601 | 5.0 | 80.0 | 5.0 | 10.0 | 16.013 | O | 1 |
| A6602 | 4.0 | 81.0 | 5.0 | 10.0 | 15.712 | O | 1 |
| A6603 | 3.0 | 82.0 | 5.0 | 10.0 | 15.412 | O | 1 |
| A6604 | 2.0 | 83.0 | 5.0 | 10.0 | 15.111 | O | 1 |
| A6605 | 1.0 | 84.0 | 5.0 | 10.0 | 14.792 | O | 1 |
| A6606 | 0.0 | 85.0 | 5.0 | 10.0 | 14.438 | O | 1 |
| A6607 | 16.0 | 64.0 | 10.0 | 10.0 | 19.072 | X | 1 |
| A6608 | 15.8 | 64.2 | 10.0 | 10.0 | 19.012 | X | 1 |
| A6609 | 15.7 | 64.3 | 10.0 | 10.0 | 18.982 | O | 1 |
| A6610 | 15.0 | 65.0 | 10.0 | 10.0 | 18.772 | O | 1 |
| A6611 | 10.0 | 70.0 | 10.0 | 10.0 | 17.267 | O | 1 |
| A6612 | 9.0 | 71.0 | 10.0 | 10.0 | 16.967 | O | 1 |
| A6613 | 8.0 | 72.0 | 10.0 | 10.0 | 16.666 | O | 1 |
| A6614 | 7.0 | 73.0 | 10.0 | 10.0 | 16.365 | O | 1 |
| A6615 | 6.0 | 74.0 | 10.0 | 10.0 | 16.064 | O | 1 |
| A6616 | 5.0 | 75.0 | 10.0 | 10.0 | 15.763 | O | 1 |
| A6617 | 4.0 | 76.0 | 10.0 | 10.0 | 15.462 | O | 1 |
| A6618 | 3.0 | 77.0 | 10.0 | 10.0 | 15.162 | O | 1 |
| A6619 | 2.0 | 78.0 | 10.0 | 10.0 | 14.861 | O | 1 |
| A6620 | 1.0 | 79.0 | 10.0 | 10.0 | 14.516 | O | 1 |
| A6621 | 0.0 | 80.0 | 10.0 | 10.0 | 14.162 | O | 1 |
| A6622 | 17.0 | 58.0 | 15.0 | 10.0 | 19.123 | X | 1 |
| A6623 | 16.6 | 58.4 | 15.0 | 10.0 | 19.003 | X | 1 |
| A6624 | 16.5 | 58.5 | 15.0 | 10.0 | 18.973 | O | 1 |
| A6625 | 16.0 | 59.0 | 15.0 | 10.0 | 18.823 | O | 1 |
| A6626 | 15.0 | 60.0 | 15.0 | 10.0 | 18.522 | O | 1 |
| A6627 | 10.0 | 65.0 | 15.0 | 10.0 | 17.018 | O | 1 |
| A6628 | 9.0 | 66.0 | 15.0 | 10.0 | 16.717 | O | 1 |
| A6629 | 8.0 | 67.0 | 15.0 | 10.0 | 16.416 | O | 1 |
| A6630 | 7.0 | 68.0 | 15.0 | 10.0 | 16.115 | O | 1 |
| A6631 | 6.0 | 69.0 | 15.0 | 10.0 | 15.814 | O | 1 |
| A6632 | 5.0 | 70.0 | 15.0 | 10.0 | 15.513 | O | 1 |
| A6633 | 4.0 | 71.0 | 15.0 | 10.0 | 15.213 | O | 1 |
| A6634 | 3.0 | 72.0 | 15.0 | 10.0 | 14.912 | O | 1 |
| A6635 | 2.0 | 73.0 | 15.0 | 10.0 | 14.595 | O | 1 |
| A6636 | 1.0 | 74.0 | 15.0 | 10.0 | 14.240 | O | 1 |
| A6637 | 0.0 | 75.0 | 15.0 | 10.0 | 13.886 | O | 1 |
| A6638 | 18.0 | 52.0 | 20.0 | 10.0 | 19.174 | X | 1 |
| A6639 | 17.5 | 52.5 | 20.0 | 10.0 | 19.024 | X | 1 |
| A6640 | 17.4 | 52.6 | 20.0 | 10.0 | 18.994 | O | 1 |

[Table 348]

| | | | | | | | |
|---|---|---|---|---|---|---|---|
| A6641 | 17.0 | 53.0 | 20.0 | 10.0 | 18.873 | O | 1 |
| A6642 | 15.0 | 55.0 | 20.0 | 10.0 | 18.272 | O | 1 |
| A6643 | 10.0 | 60.0 | 20.0 | 10.0 | 16.768 | O | 1 |
| A6644 | 9.0 | 61.0 | 20.0 | 10.0 | 16.467 | O | 1 |
| A6645 | 8.0 | 62.0 | 20.0 | 10.0 | 16.166 | O | 1 |
| A6646 | 7.0 | 63.0 | 20.0 | 10.0 | 15.865 | O | 1 |
| A6647 | 6.0 | 64.0 | 20.0 | 10.0 | 15.564 | O | 1 |
| A6648 | 5.0 | 65.0 | 20.0 | 10.0 | 15.263 | O | 1 |
| A6649 | 4.0 | 66.0 | 20.0 | 10.0 | 14.963 | O | 1 |
| A6650 | 3.0 | 67.0 | 20.0 | 10.0 | 14.662 | O | 1 |
| A6651 | 2.0 | 68.0 | 20.0 | 10.0 | 14.319 | O | 1 |
| A6652 | 1.0 | 69.0 | 20.0 | 10.0 | 13.964 | O | 1 |
| A6653 | 0.0 | 70.0 | 20.0 | 10.0 | 13.610 | O | 1 |
| A6654 | 19.0 | 46.0 | 25.0 | 10.0 | 19.225 | X | 1 |
| A6655 | 18.3 | 46.7 | 25.0 | 10.0 | 19.015 | X | 1 |
| A6656 | 18.2 | 46.8 | 25.0 | 10.0 | 18.984 | O | 1 |
| A6657 | 18.0 | 47.0 | 25.0 | 10.0 | 18.924 | O | 1 |
| A6658 | 15.0 | 50.0 | 25.0 | 10.0 | 18.022 | O | 1 |
| A6659 | 10.0 | 55.0 | 25.0 | 10.0 | 16.518 | O | 1 |
| A6660 | 9.0 | 56.0 | 25.0 | 10.0 | 16.217 | O | 1 |
| A6661 | 8.0 | 57.0 | 25.0 | 10.0 | 15.916 | O | 1 |
| A6662 | 7.0 | 58.0 | 25.0 | 10.0 | 15.615 | O | 1 |
| A6663 | 6.0 | 59.0 | 25.0 | 10.0 | 15.314 | O | 1 |
| A6664 | 5.0 | 60.0 | 25.0 | 10.0 | 15.013 | O | 1 |
| A6665 | 4.0 | 61.0 | 25.0 | 10.0 | 14.713 | O | 1 |
| A6666 | 3.0 | 62.0 | 25.0 | 10.0 | 14.398 | O | 1 |
| A6667 | 2.0 | 63.0 | 25.0 | 10.0 | 14.043 | O | 1 |
| A6668 | 1.0 | 64.0 | 25.0 | 10.0 | 13.688 | O | 1 |
| A6669 | 0.0 | 65.0 | 25.0 | 10.0 | 13.334 | O | 1 |
| A6670 | 20.0 | 40.0 | 30.0 | 10.0 | 19.276 | X | 1 |
| A6671 | 19.2 | 40.8 | 30.0 | 10.0 | 19.035 | X | 1 |
| A6672 | 19.1 | 40.9 | 30.0 | 10.0 | 19.005 | X | 1 |
| A6673 | 19.0 | 41.0 | 30.0 | 10.0 | 18.975 | O | 1 |
| A6674 | 15.0 | 45.0 | 30.0 | 10.0 | 17.772 | O | 1 |
| A6675 | 10.0 | 50.0 | 30.0 | 10.0 | 16.268 | O | 1 |
| A6676 | 9.0 | 51.0 | 30.0 | 10.0 | 15.967 | O | 1 |
| A6677 | 8.0 | 52.0 | 30.0 | 10.0 | 15.666 | O | 1 |
| A6678 | 7.0 | 53.0 | 30.0 | 10.0 | 15.365 | O | 1 |
| A6679 | 6.0 | 54.0 | 30.0 | 10.0 | 15.064 | O | 1 |
| A6680 | 5.0 | 55.0 | 30.0 | 10.0 | 14.764 | O | 1 |
| A6681 | 4.0 | 56.0 | 30.0 | 10.0 | 14.463 | O | 1 |
| A6682 | 3.0 | 57.0 | 30.0 | 10.0 | 14.122 | O | 1 |
| A6683 | 2.0 | 58.0 | 30.0 | 10.0 | 13.767 | O | 1 |
| A6684 | 1.0 | 59.0 | 30.0 | 10.0 | 13.412 | O | 1 |
| A6685 | 0.0 | 60.0 | 30.0 | 10.0 | 13.058 | O | 1 |
| A6686 | 20.0 | 35.0 | 35.0 | 10.0 | 19.026 | X | 1 |
| A6687 | 19.9 | 35.1 | 35.0 | 10.0 | 18.996 | O | 1 |
| A6688 | 19.0 | 36.0 | 35.0 | 10.0 | 18.725 | O | 1 |
| A6689 | 15.0 | 40.0 | 35.0 | 10.0 | 17.522 | O | 1 |
| A6690 | 10.0 | 45.0 | 35.0 | 10.0 | 16.018 | O | 1 |

[Table 349]

| A6691 | 9.0 | 46.0 | 35.0 | 10.0 | 15.717 | O | 1 |
|---|---|---|---|---|---|---|---|
| A6692 | 8.0 | 47.0 | 35.0 | 10.0 | 15.416 | O | 1 |
| A6693 | 7.0 | 48.0 | 35.0 | 10.0 | 15.115 | O | 1 |
| A6694 | 6.0 | 49.0 | 35.0 | 10.0 | 14.814 | O | 1 |
| A6695 | 5.0 | 50.0 | 35.0 | 10.0 | 14.514 | O | 1 |
| A6696 | 4.0 | 51.0 | 35.0 | 10.0 | 14.201 | O | 1 |
| A6697 | 3.0 | 52.0 | 35.0 | 10.0 | 13.846 | O | 1 |
| A6698 | 2.0 | 53.0 | 35.0 | 10.0 | 13.491 | O | 1 |
| A6699 | 1.0 | 54.0 | 35.0 | 10.0 | 13.136 | O | 1 |
| A6700 | 0.0 | 55.0 | 35.0 | 10.0 | 12.782 | O | 1 |
| A6701 | 21.0 | 29.0 | 40.0 | 10.0 | 19.077 | X | 1 |
| A6702 | 20.8 | 29.2 | 40.0 | 10.0 | 19.017 | X | 1 |
| A6703 | 20.7 | 29.3 | 40.0 | 10.0 | 18.987 | O | 1 |
| A6704 | 20.0 | 30.0 | 40.0 | 10.0 | 18.776 | O | 1 |
| A6705 | 15.0 | 35.0 | 40.0 | 10.0 | 17.272 | O | 1 |
| A6706 | 10.0 | 40.0 | 40.0 | 10.0 | 15.768 | O | 1 |
| A6707 | 9.0 | 41.0 | 40.0 | 10.0 | 15.467 | O | 1 |
| A6708 | 8.0 | 42.0 | 40.0 | 10.0 | 15.166 | O | 1 |
| A6709 | 7.0 | 43.0 | 40.0 | 10.0 | 14.865 | O | 1 |
| A6710 | 6.0 | 44.0 | 40.0 | 10.0 | 14.564 | O | 1 |
| A6711 | 5.0 | 45.0 | 40.0 | 10.0 | 14.264 | O | 1 |
| A6712 | 4.0 | 46.0 | 40.0 | 10.0 | 13.925 | O | 1 |
| A6713 | 3.0 | 47.0 | 40.0 | 10.0 | 13.570 | O | 1 |
| A6714 | 2.0 | 48.0 | 40.0 | 10.0 | 13.215 | O | 1 |
| A6715 | 1.0 | 49.0 | 40.0 | 10.0 | 12.860 | O | 1 |
| A6716 | 0.0 | 50.0 | 40.0 | 10.0 | 12.506 | O | 1 |
| A6717 | 22.0 | 23.0 | 45.0 | 10.0 | 19.128 | X | 1 |
| A6718 | 21.6 | 23.4 | 45.0 | 10.0 | 19.007 | X | 1 |
| A6719 | 21.5 | 23.5 | 45.0 | 10.0 | 18.977 | O | 1 |
| A6720 | 21.0 | 24.0 | 45.0 | 10.0 | 18.827 | O | 1 |
| A6721 | 20.0 | 25.0 | 45.0 | 10.0 | 18.526 | O | 1 |
| A6722 | 15.0 | 30.0 | 45.0 | 10.0 | 17.022 | O | 1 |
| A6723 | 10.0 | 35.0 | 45.0 | 10.0 | 15.518 | O | 1 |
| A6724 | 9.0 | 36.0 | 45.0 | 10.0 | 15.217 | O | 1 |
| A6725 | 8.0 | 37.0 | 45.0 | 10.0 | 14.916 | O | 1 |
| A6726 | 7.0 | 38.0 | 45.0 | 10.0 | 14.615 | O | 1 |
| A6727 | 6.0 | 39.0 | 45.0 | 10.0 | 14.315 | O | 1 |
| A6728 | 5.0 | 40.0 | 45.0 | 10.0 | 14.003 | O | 1 |
| A6729 | 4.0 | 41.0 | 45.0 | 10.0 | 13.649 | O | 1 |
| A6730 | 3.0 | 42.0 | 45.0 | 10.0 | 13.294 | O | 1 |
| A6731 | 2.0 | 43.0 | 45.0 | 10.0 | 12.939 | O | 1 |
| A6732 | 1.0 | 44.0 | 45.0 | 10.0 | 12.584 | O | 1 |
| A6733 | 0.0 | 45.0 | 45.0 | 10.0 | 12.230 | O | 1 |
| A6734 | 23.0 | 17.0 | 50.0 | 10.0 | 19.179 | X | 1 |
| A6735 | 22.5 | 17.5 | 50.0 | 10.0 | 19.028 | X | 1 |
| A6736 | 22.4 | 17.6 | 50.0 | 10.0 | 18.998 | O | 1 |
| A6737 | 22.0 | 18.0 | 50.0 | 10.0 | 18.878 | O | 1 |
| A6738 | 20.0 | 20.0 | 50.0 | 10.0 | 18.276 | O | 1 |
| A6739 | 15.0 | 25.0 | 50.0 | 10.0 | 16.772 | O | 1 |
| A6740 | 10.0 | 30.0 | 50.0 | 10.0 | 15.268 | O | 1 |

[Table 350]

| | | | | | | | |
|---|---|---|---|---|---|---|---|
| A6741 | 9.0 | 31.0 | 50.0 | 10.0 | 14.967 | O | 1 |
| A6742 | 8.0 | 32.0 | 50.0 | 10.0 | 14.666 | O | 1 |
| A6743 | 7.0 | 33.0 | 50.0 | 10.0 | 14.365 | O | 1 |
| A6744 | 6.0 | 34.0 | 50.0 | 10.0 | 14.065 | O | 1 |
| A6745 | 5.0 | 35.0 | 50.0 | 10.0 | 13.727 | O | 1 |
| A6746 | 4.0 | 36.0 | 50.0 | 10.0 | 13.373 | O | 1 |
| A6747 | 3.0 | 37.0 | 50.0 | 10.0 | 13.018 | O | 1 |
| A6748 | 2.0 | 38.0 | 50.0 | 10.0 | 12.663 | O | 1 |
| A6749 | 1.0 | 39.0 | 50.0 | 10.0 | 12.308 | O | 1 |
| A6750 | 0.0 | 40.0 | 50.0 | 10.0 | 11.954 | O | 1 |
| A6751 | 24.0 | 11.0 | 55.0 | 10.0 | 19.230 | X | 1 |
| A6752 | 23.3 | 11.7 | 55.0 | 10.0 | 19.019 | X | 1 |
| A6753 | 23.2 | 11.8 | 55.0 | 10.0 | 18.989 | O | 1 |
| A6754 | 23.0 | 12.0 | 55.0 | 10.0 | 18.929 | O | 1 |
| A6755 | 20.0 | 15.0 | 55.0 | 10.0 | 18.026 | O | 1 |
| A6756 | 15.0 | 20.0 | 55.0 | 10.0 | 16.522 | O | 1 |
| A6757 | 10.0 | 25.0 | 55.0 | 10.0 | 15.018 | O | 1 |
| A6758 | 9.0 | 26.0 | 55.0 | 10.0 | 14.717 | O | 1 |
| A6759 | 8.0 | 27.0 | 55.0 | 10.0 | 14.416 | O | 1 |
| A6760 | 7.0 | 28.0 | 55.0 | 10.0 | 14.115 | O | 1 |
| A6761 | 6.0 | 29.0 | 55.0 | 10.0 | 13.806 | O | 1 |
| A6762 | 5.0 | 30.0 | 55.0 | 10.0 | 13.451 | O | 1 |
| A6763 | 4.0 | 31.0 | 55.0 | 10.0 | 13.097 | O | 1 |
| A6764 | 3.0 | 32.0 | 55.0 | 10.0 | 12.742 | O | 1 |
| A6765 | 2.0 | 33.0 | 55.0 | 10.0 | 12.387 | O | 1 |
| A6766 | 1.0 | 34.0 | 55.0 | 10.0 | 12.033 | O | 1 |
| A6767 | 0.0 | 35.0 | 55.0 | 10.0 | 11.678 | O | 1 |
| A6768 | 25.0 | 5.0 | 60.0 | 10.0 | 19.280 | X | 1 |
| A6769 | 24.1 | 5.9 | 60.0 | 10.0 | 19.010 | X | 1 |
| A6770 | 24.0 | 6.0 | 60.0 | 10.0 | 18.980 | O | 1 |
| A6771 | 20.0 | 10.0 | 60.0 | 10.0 | 17.776 | O | 1 |
| A6772 | 15.0 | 15.0 | 60.0 | 10.0 | 16.272 | O | 1 |
| A6773 | 10.0 | 20.0 | 60.0 | 10.0 | 14.768 | O | 1 |
| A6774 | 9.0 | 21.0 | 60.0 | 10.0 | 14.467 | O | 1 |
| A6775 | 8.0 | 22.0 | 60.0 | 10.0 | 14.166 | O | 1 |
| A6776 | 7.0 | 23.0 | 60.0 | 10.0 | 13.866 | O | 1 |
| A6777 | 6.0 | 24.0 | 60.0 | 10.0 | 13.530 | O | 1 |
| A6778 | 5.0 | 25.0 | 60.0 | 10.0 | 13.175 | O | 1 |
| A6779 | 4.0 | 26.0 | 60.0 | 10.0 | 12.821 | O | 1 |
| A6780 | 3.0 | 27.0 | 60.0 | 10.0 | 12.466 | O | 1 |
| A6781 | 2.0 | 28.0 | 60.0 | 10.0 | 12.111 | O | 1 |
| A6782 | 1.0 | 29.0 | 60.0 | 10.0 | 11.757 | O | 1 |
| A6783 | 0.0 | 30.0 | 60.0 | 10.0 | 11.402 | O | 1 |
| A6784 | 20.0 | 55.0 | 5.0 | 20.0 | 19.034 | X | 1 |
| A6785 | 19.9 | 55.1 | 5.0 | 20.0 | 19.004 | X | 1 |
| A6786 | 19.0 | 56.0 | 5.0 | 20.0 | 18.733 | O | 1 |
| A6787 | 15.0 | 60.0 | 5.0 | 20.0 | 17.530 | O | 1 |
| A6788 | 10.0 | 65.0 | 5.0 | 20.0 | 16.025 | O | 1 |
| A6789 | 9.0 | 66.0 | 5.0 | 20.0 | 15.725 | O | 1 |
| A6790 | 8.0 | 67.0 | 5.0 | 20.0 | 15.424 | O | 1 |

[Table 351]

| A6791 | 7.0 | 68.0 | 5.0 | 20.0 | 15.123 | O | 1 |
|---|---|---|---|---|---|---|---|
| A6792 | 6.0 | 69.0 | 5.0 | 20.0 | 14.822 | O | 1 |
| A6793 | 5.0 | 70.0 | 5.0 | 20.0 | 14.521 | O | 1 |
| A6794 | 4.0 | 71.0 | 5.0 | 20.0 | 14.220 | O | 1 |
| A6795 | 3.0 | 72.0 | 5.0 | 20.0 | 13.920 | O | 1 |
| A6796 | 2.0 | 73.0 | 5.0 | 20.0 | 13.610 | O | 1 |
| A6797 | 1.0 | 74.0 | 5.0 | 20.0 | 13.255 | O | 1 |
| A6798 | 0.0 | 75.0 | 5.0 | 20.0 | 12.900 | O | 1 |
| A6799 | 21.0 | 49.0 | 10.0 | 20.0 | 19.085 | X | 1 |
| A6800 | 20.8 | 49.2 | 10.0 | 20.0 | 19.024 | X | 1 |
| A6801 | 20.7 | 49.3 | 10.0 | 20.0 | 18.994 | O | 1 |
| A6802 | 20.0 | 50.0 | 10.0 | 20.0 | 18.784 | O | 1 |
| A6803 | 15.0 | 55.0 | 10.0 | 20.0 | 17.280 | O | 1 |
| A6804 | 10.0 | 60.0 | 10.0 | 20.0 | 15.775 | O | 1 |
| A6805 | 9.0 | 61.0 | 10.0 | 20.0 | 15.475 | O | 1 |
| A6806 | 8.0 | 62.0 | 10.0 | 20.0 | 15.174 | O | 1 |
| A6807 | 7.0 | 63.0 | 10.0 | 20.0 | 14.873 | O | 1 |
| A6808 | 6.0 | 64.0 | 10.0 | 20.0 | 14.572 | O | 1 |
| A6809 | 5.0 | 65.0 | 10.0 | 20.0 | 14.271 | O | 1 |
| A6810 | 4.0 | 66.0 | 10.0 | 20.0 | 13.970 | O | 1 |
| A6811 | 3.0 | 67.0 | 10.0 | 20.0 | 13.670 | O | 1 |
| A6812 | 2.0 | 68.0 | 10.0 | 20.0 | 13.334 | O | 1 |
| A6813 | 1.0 | 69.0 | 10.0 | 20.0 | 12.979 | O | 1 |
| A6814 | 0.0 | 70.0 | 10.0 | 20.0 | 12.624 | O | 1 |
| A6815 | 22.0 | 43.0 | 15.0 | 20.0 | 19.135 | X | 1 |
| A6816 | 21.6 | 43.4 | 15.0 | 20.0 | 19.015 | X | 1 |
| A6817 | 21.5 | 43.5 | 15.0 | 20.0 | 18.985 | O | 1 |
| A6818 | 21.0 | 44.0 | 15.0 | 20.0 | 18.835 | O | 1 |
| A6819 | 20.0 | 45.0 | 15.0 | 20.0 | 18.534 | O | 1 |
| A6820 | 15.0 | 50.0 | 15.0 | 20.0 | 17.030 | O | 1 |
| A6821 | 10.0 | 55.0 | 15.0 | 20.0 | 15.526 | O | 1 |
| A6822 | 9.0 | 56.0 | 15.0 | 20.0 | 15.225 | O | 1 |
| A6823 | 8.0 | 57.0 | 15.0 | 20.0 | 14.924 | O | 1 |
| A6824 | 7.0 | 58.0 | 15.0 | 20.0 | 14.623 | O | 1 |
| A6825 | 6.0 | 59.0 | 15.0 | 20.0 | 14.322 | O | 1 |
| A6826 | 5.0 | 60.0 | 15.0 | 20.0 | 14.021 | O | 1 |
| A6827 | 4.0 | 61.0 | 15.0 | 20.0 | 13.721 | O | 1 |
| A6828 | 3.0 | 62.0 | 15.0 | 20.0 | 13.412 | O | 1 |
| A6829 | 2.0 | 63.0 | 15.0 | 20.0 | 13.058 | O | 1 |
| A6830 | 1.0 | 64.0 | 15.0 | 20.0 | 12.703 | O | 1 |
| A6831 | 0.0 | 65.0 | 15.0 | 20.0 | 12.348 | O | 1 |
| A6832 | 23.0 | 37.0 | 20.0 | 20.0 | 19.186 | X | 1 |
| A6833 | 22.4 | 37.6 | 20.0 | 20.0 | 19.006 | X | 1 |
| A6834 | 22.3 | 37.7 | 20.0 | 20.0 | 18.976 | O | 1 |
| A6835 | 22.0 | 38.0 | 20.0 | 20.0 | 18.886 | O | 1 |
| A6836 | 20.0 | 40.0 | 20.0 | 20.0 | 18.284 | O | 1 |
| A6837 | 15.0 | 45.0 | 20.0 | 20.0 | 16.780 | O | 1 |
| A6838 | 10.0 | 50.0 | 20.0 | 20.0 | 15.276 | O | 1 |
| A6839 | 9.0 | 51.0 | 20.0 | 20.0 | 14.975 | O | 1 |
| A6840 | 8.0 | 52.0 | 20.0 | 20.0 | 14.674 | O | 1 |

[Table 352]

| A6841 | 7.0 | 53.0 | 20.0 | 20.0 | 14.373 | O | 1 |
|-------|-----|------|------|------|--------|---|---|
| A6842 | 6.0 | 54.0 | 20.0 | 20.0 | 14.072 | O | 1 |
| A6843 | 5.0 | 55.0 | 20.0 | 20.0 | 13.771 | O | 1 |
| A6844 | 4.0 | 56.0 | 20.0 | 20.0 | 13.471 | O | 1 |
| A6845 | 3.0 | 57.0 | 20.0 | 20.0 | 13.136 | O | 1 |
| A6846 | 2.0 | 58.0 | 20.0 | 20.0 | 12.782 | O | 1 |
| A6847 | 1.0 | 59.0 | 20.0 | 20.0 | 12.427 | O | 1 |
| A6848 | 0.0 | 60.0 | 20.0 | 20.0 | 12.072 | O | 1 |
| A6849 | 24.0 | 31.0 | 25.0 | 20.0 | 19.237 | X | 1 |
| A6850 | 23.3 | 31.7 | 25.0 | 20.0 | 19.027 | X | 1 |
| A6851 | 23.2 | 31.8 | 25.0 | 20.0 | 18.997 | O | 1 |
| A6852 | 23.0 | 32.0 | 25.0 | 20.0 | 18.936 | O | 1 |
| A6853 | 20.0 | 35.0 | 25.0 | 20.0 | 18.034 | O | 1 |
| A6854 | 15.0 | 40.0 | 25.0 | 20.0 | 16.530 | O | 1 |
| A6855 | 10.0 | 45.0 | 25.0 | 20.0 | 15.026 | O | 1 |
| A6856 | 9.0 | 46.0 | 25.0 | 20.0 | 14.725 | O | 1 |
| A6857 | 8.0 | 47.0 | 25.0 | 20.0 | 14.424 | O | 1 |
| A6858 | 7.0 | 48.0 | 25.0 | 20.0 | 14.123 | O | 1 |
| A6859 | 6.0 | 49.0 | 25.0 | 20.0 | 13.822 | O | 1 |
| A6860 | 5.0 | 50.0 | 25.0 | 20.0 | 13.521 | O | 1 |
| A6861 | 4.0 | 51.0 | 25.0 | 20.0 | 13.215 | O | 1 |
| A6862 | 3.0 | 52.0 | 25.0 | 20.0 | 12.860 | O | 1 |
| A6863 | 2.0 | 53.0 | 25.0 | 20.0 | 12.506 | O | 1 |
| A6864 | 1.0 | 54.0 | 25.0 | 20.0 | 12.151 | O | 1 |
| A6865 | 0.0 | 55.0 | 25.0 | 20.0 | 11.796 | O | 1 |
| A6866 | 25.0 | 25.0 | 30.0 | 20.0 | 19.288 | X | 1 |
| A6867 | 24.1 | 25.9 | 30.0 | 20.0 | 19.017 | X | 1 |
| A6868 | 24.0 | 26.0 | 30.0 | 20.0 | 18.987 | O | 1 |
| A6869 | 20.0 | 30.0 | 30.0 | 20.0 | 17.784 | O | 1 |
| A6870 | 15.0 | 35.0 | 30.0 | 20.0 | 16.280 | O | 1 |
| A6871 | 10.0 | 40.0 | 30.0 | 20.0 | 14.776 | O | 1 |
| A6872 | 9.0 | 41.0 | 30.0 | 20.0 | 14.475 | O | 1 |
| A6873 | 8.0 | 42.0 | 30.0 | 20.0 | 14.174 | O | 1 |
| A6874 | 7.0 | 43.0 | 30.0 | 20.0 | 13.873 | O | 1 |
| A6875 | 6.0 | 44.0 | 30.0 | 20.0 | 13.572 | O | 1 |
| A6876 | 5.0 | 45.0 | 30.0 | 20.0 | 13.272 | O | 1 |
| A6877 | 4.0 | 46.0 | 30.0 | 20.0 | 12.939 | O | 1 |
| A6878 | 3.0 | 47.0 | 30.0 | 20.0 | 12.584 | O | 1 |
| A6879 | 2.0 | 48.0 | 30.0 | 20.0 | 12.230 | O | 1 |
| A6880 | 1.0 | 49.0 | 30.0 | 20.0 | 11.875 | O | 1 |
| A6881 | 0.0 | 50.0 | 30.0 | 20.0 | 11.520 | O | 1 |
| A6882 | 25.0 | 20.0 | 35.0 | 20.0 | 19.038 | X | 1 |
| A6883 | 24.9 | 20.1 | 35.0 | 20.0 | 19.008 | X | 1 |
| A6884 | 24.8 | 20.2 | 35.0 | 20.0 | 18.978 | O | 1 |
| A6885 | 24.0 | 21.0 | 35.0 | 20.0 | 18.737 | O | 1 |
| A6886 | 20.0 | 25.0 | 35.0 | 20.0 | 17.534 | O | 1 |
| A6887 | 15.0 | 30.0 | 35.0 | 20.0 | 16.030 | O | 1 |
| A6888 | 10.0 | 35.0 | 35.0 | 20.0 | 14.526 | O | 1 |
| A6889 | 9.0 | 36.0 | 35.0 | 20.0 | 14.225 | O | 1 |
| A6890 | 8.0 | 37.0 | 35.0 | 20.0 | 13.924 | O | 1 |

[Table 353]

372

| A6891 | 7.0 | 38.0 | 35.0 | 20.0 | 13.623 | O | 1 |
|---|---|---|---|---|---|---|---|
| A6892 | 6.0 | 39.0 | 35.0 | 20.0 | 13.322 | O | 1 |
| A6893 | 5.0 | 40.0 | 35.0 | 20.0 | 13.018 | O | 1 |
| A6894 | 4.0 | 41.0 | 35.0 | 20.0 | 12.663 | O | 1 |
| A6895 | 3.0 | 42.0 | 35.0 | 20.0 | 12.308 | O | 1 |
| A6896 | 2.0 | 43.0 | 35.0 | 20.0 | 11.954 | O | 1 |
| A6897 | 1.0 | 44.0 | 35.0 | 20.0 | 11.599 | O | 1 |
| A6898 | 0.0 | 45.0 | 35.0 | 20.0 | 11.244 | O | 1 |
| A6899 | 26.0 | 14.0 | 40.0 | 20.0 | 19.089 | X | 1 |
| A6900 | 25.8 | 14.2 | 40.0 | 20.0 | 19.029 | X | 1 |
| A6901 | 25.7 | 14.3 | 40.0 | 20.0 | 18.999 | O | 1 |
| A6902 | 25.0 | 15.0 | 40.0 | 20.0 | 18.788 | O | 1 |
| A6903 | 20.0 | 20.0 | 40.0 | 20.0 | 17.284 | O | 1 |
| A6904 | 15.0 | 25.0 | 40.0 | 20.0 | 15.780 | O | 1 |
| A6905 | 10.0 | 30.0 | 40.0 | 20.0 | 14.276 | O | 1 |
| A6906 | 9.0 | 31.0 | 40.0 | 20.0 | 13.975 | O | 1 |
| A6907 | 8.0 | 32.0 | 40.0 | 20.0 | 13.674 | O | 1 |
| A6908 | 7.0 | 33.0 | 40.0 | 20.0 | 13.373 | O | 1 |
| A6909 | 6.0 | 34.0 | 40.0 | 20.0 | 13.072 | O | 1 |
| A6910 | 5.0 | 35.0 | 40.0 | 20.0 | 12.742 | O | 1 |
| A6911 | 4.0 | 36.0 | 40.0 | 20.0 | 12.387 | O | 1 |
| A6912 | 3.0 | 37.0 | 40.0 | 20.0 | 12.032 | O | 1 |
| A6913 | 2.0 | 38.0 | 40.0 | 20.0 | 11.678 | O | 1 |
| A6914 | 1.0 | 39.0 | 40.0 | 20.0 | 11.323 | O | 1 |
| A6915 | 0.0 | 40.0 | 40.0 | 20.0 | 10.968 | O | 1 |
| A6916 | 27.0 | 8.0 | 45.0 | 20.0 | 19.140 | X | 1 |
| A6917 | 26.6 | 8.4 | 45.0 | 20.0 | 19.020 | X | 1 |
| A6918 | 26.5 | 8.5 | 45.0 | 20.0 | 18.990 | O | 1 |
| A6919 | 26.0 | 9.0 | 45.0 | 20.0 | 18.839 | O | 1 |
| A6920 | 20.0 | 15.0 | 45.0 | 20.0 | 17.034 | O | 1 |
| A6921 | 15.0 | 20.0 | 45.0 | 20.0 | 15.530 | O | 1 |
| A6922 | 10.0 | 25.0 | 45.0 | 20.0 | 14.026 | O | 1 |
| A6923 | 9.0 | 26.0 | 45.0 | 20.0 | 13.725 | O | 1 |
| A6924 | 8.0 | 27.0 | 45.0 | 20.0 | 13.424 | O | 1 |
| A6925 | 7.0 | 28.0 | 45.0 | 20.0 | 13.123 | O | 1 |
| A6926 | 6.0 | 29.0 | 45.0 | 20.0 | 12.820 | O | 1 |
| A6927 | 5.0 | 30.0 | 45.0 | 20.0 | 12.466 | O | 1 |
| A6928 | 4.0 | 31.0 | 45.0 | 20.0 | 12.111 | O | 1 |
| A6929 | 3.0 | 32.0 | 45.0 | 20.0 | 11.756 | O | 1 |
| A6930 | 2.0 | 33.0 | 45.0 | 20.0 | 11.402 | O | 1 |
| A6931 | 1.0 | 34.0 | 45.0 | 20.0 | 11.047 | O | 1 |
| A6932 | 0.0 | 35.0 | 45.0 | 20.0 | 10.692 | O | 1 |
| A6933 | 28.0 | 2.0 | 50.0 | 20.0 | 19.191 | X | 1 |
| A6934 | 27.4 | 2.6 | 50.0 | 20.0 | 19.010 | X | 1 |
| A6935 | 27.3 | 2.7 | 50.0 | 20.0 | 18.980 | O | 1 |
| A6936 | 27.0 | 3.0 | 50.0 | 20.0 | 18.890 | O | 1 |
| A6937 | 20.0 | 10.0 | 50.0 | 20.0 | 16.784 | O | 1 |
| A6938 | 15.0 | 15.0 | 50.0 | 20.0 | 15.280 | O | 1 |
| A6939 | 10.0 | 20.0 | 50.0 | 20.0 | 13.776 | O | 1 |
| A6940 | 9.0 | 21.0 | 50.0 | 20.0 | 13.475 | O | 1 |

[Table 354]

| A6941 | 8.0 | 22.0 | 50.0 | 20.0 | 13.174 | O | 1 |
|---|---|---|---|---|---|---|---|
| A6942 | 7.0 | 23.0 | 50.0 | 20.0 | 12.873 | O | 1 |
| A6943 | 6.0 | 24.0 | 50.0 | 20.0 | 12.544 | O | 1 |
| A6944 | 5.0 | 25.0 | 50.0 | 20.0 | 12.190 | O | 1 |
| A6945 | 4.0 | 26.0 | 50.0 | 20.0 | 11.835 | O | 1 |
| A6946 | 3.0 | 27.0 | 50.0 | 20.0 | 11.480 | O | 1 |
| A6947 | 2.0 | 28.0 | 50.0 | 20.0 | 11.126 | O | 1 |
| A6948 | 1.0 | 29.0 | 50.0 | 20.0 | 10.771 | O | 1 |
| A6949 | 0.0 | 30.0 | 50.0 | 20.0 | 10.416 | O | 1 |
| A6950 | 25.0 | 40.0 | 5.0 | 30.0 | 19.046 | X | 1 |
| A6951 | 24.9 | 40.1 | 5.0 | 30.0 | 19.016 | X | 1 |
| A6952 | 24.8 | 40.2 | 5.0 | 30.0 | 18.986 | O | 1 |
| A6953 | 24.0 | 41.0 | 5.0 | 30.0 | 18.745 | O | 1 |
| A6954 | 20.0 | 45.0 | 5.0 | 30.0 | 17.542 | O | 1 |
| A6955 | 15.0 | 50.0 | 5.0 | 30.0 | 16.038 | O | 1 |
| A6956 | 10.0 | 55.0 | 5.0 | 30.0 | 14.533 | O | 1 |
| A6957 | 9.0 | 56.0 | 5.0 | 30.0 | 14.233 | O | 1 |
| A6958 | 8.0 | 57.0 | 5.0 | 30.0 | 13.932 | O | 1 |
| A6959 | 7.0 | 58.0 | 5.0 | 30.0 | 13.631 | O | 1 |
| A6960 | 6.0 | 59.0 | 5.0 | 30.0 | 13.330 | O | 1 |
| A6961 | 5.0 | 60.0 | 5.0 | 30.0 | 13.029 | O | 1 |
| A6962 | 4.0 | 61.0 | 5.0 | 30.0 | 12.728 | O | 1 |
| A6963 | 3.0 | 62.0 | 5.0 | 30.0 | 12.427 | O | 1 |
| A6964 | 2.0 | 63.0 | 5.0 | 30.0 | 12.072 | O | 1 |
| A6965 | 1.0 | 64.0 | 5.0 | 30.0 | 11.717 | O | 1 |
| A6966 | 0.0 | 65.0 | 5.0 | 30.0 | 11.363 | O | 1 |
| A6967 | 26.0 | 34.0 | 10.0 | 30.0 | 19.097 | X | 1 |
| A6968 | 25.7 | 34.3 | 10.0 | 30.0 | 19.006 | X | 1 |
| A6969 | 25.6 | 34.4 | 10.0 | 30.0 | 18.976 | O | 1 |
| A6970 | 25.0 | 35.0 | 10.0 | 30.0 | 18.796 | O | 1 |
| A6971 | 20.0 | 40.0 | 10.0 | 30.0 | 17.292 | O | 1 |
| A6972 | 15.0 | 45.0 | 10.0 | 30.0 | 15.788 | O | 1 |
| A6973 | 10.0 | 50.0 | 10.0 | 30.0 | 14.283 | O | 1 |
| A6974 | 9.0 | 51.0 | 10.0 | 30.0 | 13.983 | O | 1 |
| A6975 | 8.0 | 52.0 | 10.0 | 30.0 | 13.682 | O | 1 |
| A6976 | 7.0 | 53.0 | 10.0 | 30.0 | 13.381 | O | 1 |
| A6977 | 6.0 | 54.0 | 10.0 | 30.0 | 13.080 | O | 1 |
| A6978 | 5.0 | 55.0 | 10.0 | 30.0 | 12.779 | O | 1 |
| A6979 | 4.0 | 56.0 | 10.0 | 30.0 | 12.478 | O | 1 |
| A6980 | 3.0 | 57.0 | 10.0 | 30.0 | 12.151 | O | 1 |
| A6981 | 2.0 | 58.0 | 10.0 | 30.0 | 11.796 | O | 1 |
| A6982 | 1.0 | 59.0 | 10.0 | 30.0 | 11.441 | O | 1 |
| A6983 | 0.0 | 60.0 | 10.0 | 30.0 | 11.087 | O | 1 |
| A6984 | 27.0 | 28.0 | 15.0 | 30.0 | 19.148 | X | 1 |
| A6985 | 26.6 | 28.4 | 15.0 | 30.0 | 19.027 | X | 1 |
| A6986 | 26.5 | 28.5 | 15.0 | 30.0 | 18.997 | O | 1 |
| A6987 | 26.0 | 29.0 | 15.0 | 30.0 | 18.847 | O | 1 |
| A6988 | 20.0 | 35.0 | 15.0 | 30.0 | 17.042 | O | 1 |
| A6989 | 15.0 | 40.0 | 15.0 | 30.0 | 15.538 | O | 1 |
| A6990 | 10.0 | 45.0 | 15.0 | 30.0 | 14.033 | O | 1 |

[Table 355]

| A6991 | 9.0 | 46.0 | 15.0 | 30.0 | 13.733 | O | 1 |
|---|---|---|---|---|---|---|---|
| A6992 | 8.0 | 47.0 | 15.0 | 30.0 | 13.432 | O | 1 |
| A6993 | 7.0 | 48.0 | 15.0 | 30.0 | 13.131 | O | 1 |
| A6994 | 6.0 | 49.0 | 15.0 | 30.0 | 12.830 | O | 1 |
| A6995 | 5.0 | 50.0 | 15.0 | 30.0 | 12.529 | O | 1 |
| A6996 | 4.0 | 51.0 | 15.0 | 30.0 | 12.228 | O | 1 |
| A6997 | 3.0 | 52.0 | 15.0 | 30.0 | 11.875 | O | 1 |
| A6998 | 2.0 | 53.0 | 15.0 | 30.0 | 11.520 | O | 1 |
| A6999 | 1.0 | 54.0 | 15.0 | 30.0 | 11.165 | O | 1 |
| A7000 | 0.0 | 55.0 | 15.0 | 30.0 | 10.811 | O | 1 |
| A7001 | 28.0 | 22.0 | 20.0 | 30.0 | 19.198 | X | 1 |
| A7002 | 27.4 | 22.6 | 20.0 | 30.0 | 19.018 | X | 1 |
| A7003 | 27.3 | 22.7 | 20.0 | 30.0 | 18.988 | O | 1 |
| A7004 | 27.0 | 23.0 | 20.0 | 30.0 | 18.898 | O | 1 |
| A7005 | 20.0 | 30.0 | 20.0 | 30.0 | 16.792 | O | 1 |
| A7006 | 15.0 | 35.0 | 20.0 | 30.0 | 15.288 | O | 1 |
| A7007 | 10.0 | 40.0 | 20.0 | 30.0 | 13.784 | O | 1 |
| A7008 | 9.0 | 41.0 | 20.0 | 30.0 | 13.483 | O | 1 |
| A7009 | 8.0 | 42.0 | 20.0 | 30.0 | 13.182 | O | 1 |
| A7010 | 7.0 | 43.0 | 20.0 | 30.0 | 12.881 | O | 1 |
| A7011 | 6.0 | 44.0 | 20.0 | 30.0 | 12.580 | O | 1 |
| A7012 | 5.0 | 45.0 | 20.0 | 30.0 | 12.279 | O | 1 |
| A7013 | 4.0 | 46.0 | 20.0 | 30.0 | 11.953 | O | 1 |
| A7014 | 3.0 | 47.0 | 20.0 | 30.0 | 11.599 | O | 1 |
| A7015 | 2.0 | 48.0 | 20.0 | 30.0 | 11.244 | O | 1 |
| A7016 | 1.0 | 49.0 | 20.0 | 30.0 | 10.889 | O | 1 |
| A7017 | 0.0 | 45.0 | 25.0 | 30.0 | 10.259 | O | 1 |
| A7018 | 29.0 | 16.0 | 25.0 | 30.0 | 19.249 | X | 1 |
| A7019 | 28.2 | 16.8 | 25.0 | 30.0 | 19.009 | X | 1 |
| A7020 | 28.1 | 16.9 | 25.0 | 30.0 | 18.979 | O | 1 |
| A7021 | 28.0 | 17.0 | 25.0 | 30.0 | 18.949 | O | 1 |
| A7022 | 20.0 | 25.0 | 25.0 | 30.0 | 16.542 | O | 1 |
| A7023 | 15.0 | 30.0 | 25.0 | 30.0 | 15.038 | O | 1 |
| A7024 | 10.0 | 35.0 | 25.0 | 30.0 | 13.534 | O | 1 |
| A7025 | 9.0 | 36.0 | 25.0 | 30.0 | 13.233 | O | 1 |
| A7026 | 8.0 | 37.0 | 25.0 | 30.0 | 12.932 | O | 1 |
| A7027 | 7.0 | 38.0 | 25.0 | 30.0 | 12.631 | O | 1 |
| A7028 | 6.0 | 39.0 | 25.0 | 30.0 | 12.330 | O | 1 |
| A7029 | 5.0 | 40.0 | 25.0 | 30.0 | 12.029 | O | 1 |
| A7030 | 4.0 | 41.0 | 25.0 | 30.0 | 11.677 | O | 1 |
| A7031 | 3.0 | 42.0 | 25.0 | 30.0 | 11.323 | O | 1 |
| A7032 | 2.0 | 43.0 | 25.0 | 30.0 | 10.968 | O | 1 |
| A7033 | 1.0 | 44.0 | 25.0 | 30.0 | 10.613 | O | 1 |
| A7034 | 0.0 | 45.0 | 25.0 | 30.0 | 10.259 | O | 1 |
| A7035 | 30.0 | 10.0 | 30.0 | 30.0 | 19.300 | X | 1 |
| A7036 | 29.1 | 10.9 | 30.0 | 30.0 | 19.030 | X | 1 |
| A7037 | 29.0 | 11.0 | 30.0 | 30.0 | 18.999 | O | 1 |
| A7038 | 20.0 | 20.0 | 30.0 | 30.0 | 16.292 | O | 1 |
| A7039 | 15.0 | 25.0 | 30.0 | 30.0 | 14.788 | O | 1 |
| A7040 | 10.0 | 30.0 | 30.0 | 30.0 | 13.284 | O | 1 |

[Table 356]

| A7041 | 9.0 | 31.0 | 30.0 | 30.0 | 12.983 | O | 1 |
|---|---|---|---|---|---|---|---|
| A7042 | 8.0 | 32.0 | 30.0 | 30.0 | 12.682 | O | 1 |
| A7043 | 7.0 | 33.0 | 30.0 | 30.0 | 12.381 | O | 1 |
| A7044 | 6.0 | 34.0 | 30.0 | 30.0 | 12.080 | O | 1 |
| A7045 | 5.0 | 35.0 | 30.0 | 30.0 | 11.756 | O | 1 |
| A7046 | 4.0 | 36.0 | 30.0 | 30.0 | 11.402 | O | 1 |
| A7047 | 3.0 | 37.0 | 30.0 | 30.0 | 11.047 | O | 1 |
| A7048 | 2.0 | 38.0 | 30.0 | 30.0 | 10.692 | O | 1 |
| A7049 | 1.0 | 39.0 | 30.0 | 30.0 | 10.337 | O | 1 |
| A7050 | 0.0 | 40.0 | 30.0 | 30.0 | 9.983 | O | 1 |
| A7051 | 30.0 | 5.0 | 35.0 | 30.0 | 19.050 | X | 1 |
| A7052 | 29.9 | 5.1 | 35.0 | 30.0 | 19.020 | X | 1 |
| A7053 | 29.8 | 5.2 | 35.0 | 30.0 | 18.990 | O | 1 |
| A7054 | 29.0 | 6.0 | 35.0 | 30.0 | 18.749 | O | 1 |
| A7055 | 20.0 | 15.0 | 35.0 | 30.0 | 16.042 | O | 1 |
| A7056 | 15.0 | 20.0 | 35.0 | 30.0 | 14.538 | O | 1 |
| A7057 | 10.0 | 25.0 | 35.0 | 30.0 | 13.034 | O | 1 |
| A7058 | 9.0 | 26.0 | 35.0 | 30.0 | 12.733 | O | 1 |
| A7059 | 8.0 | 27.0 | 35.0 | 30.0 | 12.432 | O | 1 |
| A7060 | 7.0 | 28.0 | 35.0 | 30.0 | 12.131 | O | 1 |
| A7061 | 6.0 | 29.0 | 35.0 | 30.0 | 11.830 | O | 1 |
| A7062 | 5.0 | 30.0 | 35.0 | 30.0 | 11.480 | O | 1 |
| A7063 | 4.0 | 31.0 | 35.0 | 30.0 | 11.126 | O | 1 |
| A7064 | 3.0 | 32.0 | 35.0 | 30.0 | 10.771 | O | 1 |
| A7065 | 2.0 | 33.0 | 35.0 | 30.0 | 10.416 | O | 1 |
| A7066 | 1.0 | 34.0 | 35.0 | 30.0 | 10.061 | O | 1 |
| A7067 | 0.0 | 35.0 | 35.0 | 30.0 | 9.707 | O | 1 |
| A7068 | 30.0 | 25.0 | 5.0 | 40.0 | 19.058 | X | 1 |
| A7069 | 29.9 | 25.1 | 5.0 | 40.0 | 19.028 | X | 1 |
| A7070 | 29.8 | 25.2 | 5.0 | 40.0 | 18.998 | O | 1 |
| A7071 | 29.0 | 26.0 | 5.0 | 40.0 | 18.757 | O | 1 |
| A7072 | 20.0 | 35.0 | 5.0 | 40.0 | 16.050 | O | 1 |
| A7073 | 15.0 | 40.0 | 5.0 | 40.0 | 14.545 | O | 1 |
| A7074 | 10.0 | 45.0 | 5.0 | 40.0 | 13.041 | O | 1 |
| A7075 | 9.0 | 46.0 | 5.0 | 40.0 | 12.741 | O | 1 |
| A7076 | 8.0 | 47.0 | 5.0 | 40.0 | 12.440 | O | 1 |
| A7077 | 7.0 | 48.0 | 5.0 | 40.0 | 12.139 | O | 1 |
| A7078 | 6.0 | 49.0 | 5.0 | 40.0 | 11.838 | O | 1 |
| A7079 | 5.0 | 50.0 | 5.0 | 40.0 | 11.537 | O | 1 |
| A7080 | 4.0 | 51.0 | 5.0 | 40.0 | 11.236 | O | 1 |
| A7081 | 3.0 | 52.0 | 5.0 | 40.0 | 10.889 | O | 1 |
| A7082 | 2.0 | 53.0 | 5.0 | 40.0 | 10.535 | O | 1 |
| A7083 | 1.0 | 54.0 | 5.0 | 40.0 | 10.180 | O | 1 |
| A7084 | 0.0 | 55.0 | 5.0 | 40.0 | 9.825 | O | 1 |
| A7085 | 31.0 | 19.0 | 10.0 | 40.0 | 19.109 | X | 1 |
| A7086 | 30.7 | 19.3 | 10.0 | 40.0 | 19.019 | X | 1 |
| A7087 | 30.6 | 19.4 | 10.0 | 40.0 | 18.989 | O | 1 |
| A7088 | 30.0 | 20.0 | 10.0 | 40.0 | 18.808 | O | 1 |
| A7089 | 20.0 | 30.0 | 10.0 | 40.0 | 15.800 | O | 1 |
| A7090 | 15.0 | 35.0 | 10.0 | 40.0 | 14.296 | O | 1 |

[Table 357]

| | | | | | | | |
|---|---|---|---|---|---|---|---|
| A7091 | 10.0 | 40.0 | 10.0 | 40.0 | 12.791 | O | 1 |
| A7092 | 9.0 | 41.0 | 10.0 | 40.0 | 12.491 | O | 1 |
| A7093 | 8.0 | 42.0 | 10.0 | 40.0 | 12.190 | O | 1 |
| A7094 | 7.0 | 43.0 | 10.0 | 40.0 | 11.889 | O | 1 |
| A7095 | 6.0 | 44.0 | 10.0 | 40.0 | 11.588 | O | 1 |
| A7096 | 5.0 | 45.0 | 10.0 | 40.0 | 11.287 | O | 1 |
| A7097 | 4.0 | 46.0 | 10.0 | 40.0 | 10.968 | O | 1 |
| A7098 | 3.0 | 47.0 | 10.0 | 40.0 | 10.613 | O | 1 |
| A7099 | 2.0 | 48.0 | 10.0 | 40.0 | 10.259 | O | 1 |
| A7100 | 1.0 | 49.0 | 10.0 | 40.0 | 9.904 | O | 1 |
| A7101 | 0.0 | 50.0 | 10.0 | 40.0 | 9.549 | O | 1 |
| A7102 | 32.0 | 13.0 | 15.0 | 40.0 | 19.160 | X | 1 |
| A7103 | 31.5 | 13.5 | 15.0 | 40.0 | 19.009 | X | 1 |
| A7104 | 31.4 | 13.6 | 15.0 | 40.0 | 18.979 | O | 1 |
| A7105 | 31.0 | 14.0 | 15.0 | 40.0 | 18.859 | O | 1 |
| A7106 | 30.0 | 15.0 | 15.0 | 40.0 | 18.558 | O | 1 |
| A7107 | 20.0 | 25.0 | 15.0 | 40.0 | 15.550 | O | 1 |
| A7108 | 15.0 | 30.0 | 15.0 | 40.0 | 14.046 | O | 1 |
| A7109 | 10.0 | 35.0 | 15.0 | 40.0 | 12.541 | O | 1 |
| A7110 | 9.0 | 36.0 | 15.0 | 40.0 | 12.241 | O | 1 |
| A7111 | 8.0 | 37.0 | 15.0 | 40.0 | 11.940 | O | 1 |
| A7112 | 7.0 | 38.0 | 15.0 | 40.0 | 11.639 | O | 1 |
| A7113 | 6.0 | 39.0 | 15.0 | 40.0 | 11.338 | O | 1 |
| A7114 | 5.0 | 40.0 | 15.0 | 40.0 | 11.037 | O | 1 |
| A7115 | 4.0 | 41.0 | 15.0 | 40.0 | 10.692 | O | 1 |
| A7116 | 3.0 | 42.0 | 15.0 | 40.0 | 10.337 | O | 1 |
| A7117 | 2.0 | 43.0 | 15.0 | 40.0 | 9.983 | O | 1 |
| A7118 | 1.0 | 44.0 | 15.0 | 40.0 | 9.628 | O | 1 |
| A7119 | 0.0 | 45.0 | 15.0 | 40.0 | 9.273 | O | 1 |
| A7120 | 33.0 | 7.0 | 20.0 | 40.0 | 19.211 | X | 1 |
| A7121 | 32.3 | 7.7 | 20.0 | 40.0 | 19.000 | X | 1 |
| A7122 | 32.2 | 7.8 | 20.0 | 40.0 | 18.970 | O | 1 |
| A7123 | 32.0 | 8.0 | 20.0 | 40.0 | 18.910 | O | 1 |
| A7124 | 30.0 | 10.0 | 20.0 | 40.0 | 18.308 | O | 1 |
| A7125 | 20.0 | 20.0 | 20.0 | 40.0 | 15.300 | O | 1 |
| A7126 | 15.0 | 25.0 | 20.0 | 40.0 | 13.796 | O | 1 |
| A7127 | 10.0 | 30.0 | 20.0 | 40.0 | 12.292 | O | 1 |
| A7128 | 9.0 | 31.0 | 20.0 | 40.0 | 11.991 | O | 1 |
| A7129 | 8.0 | 32.0 | 20.0 | 40.0 | 11.690 | O | 1 |
| A7130 | 7.0 | 33.0 | 20.0 | 40.0 | 11.389 | O | 1 |
| A7131 | 6.0 | 34.0 | 20.0 | 40.0 | 11.088 | O | 1 |
| A7132 | 5.0 | 35.0 | 20.0 | 40.0 | 10.771 | O | 1 |
| A7133 | 4.0 | 36.0 | 20.0 | 40.0 | 10.416 | O | 1 |
| A7134 | 3.0 | 37.0 | 20.0 | 40.0 | 10.061 | O | 1 |
| A7135 | 2.0 | 38.0 | 20.0 | 40.0 | 9.707 | O | 1 |
| A7136 | 1.0 | 39.0 | 20.0 | 40.0 | 9.352 | O | 1 |
| A7137 | 0.0 | 40.0 | 20.0 | 40.0 | 8.997 | O | 1 |
| A7138 | 34.0 | 1.0 | 25.0 | 40.0 | 19.261 | X | 1 |
| A7139 | 33.2 | 1.8 | 25.0 | 40.0 | 19.021 | X | 1 |
| A7140 | 33.1 | 1.9 | 25.0 | 40.0 | 18.991 | O | 1 |

[Table 358]

| A7141 | 33.0 | 2.0 | 25.0 | 40.0 | 18.961 | O | 1 |
|---|---|---|---|---|---|---|---|
| A7142 | 30.0 | 5.0 | 25.0 | 40.0 | 18.058 | O | 1 |
| A7143 | 20.0 | 15.0 | 25.0 | 40.0 | 15.050 | O | 1 |
| A7144 | 15.0 | 20.0 | 25.0 | 40.0 | 13.546 | O | 1 |
| A7145 | 10.0 | 25.0 | 25.0 | 40.0 | 12.042 | O | 1 |
| A7146 | 9.0 | 26.0 | 25.0 | 40.0 | 11.741 | O | 1 |
| A7147 | 8.0 | 27.0 | 25.0 | 40.0 | 11.440 | O | 1 |
| A7148 | 7.0 | 28.0 | 25.0 | 40.0 | 11.139 | O | 1 |
| A7149 | 6.0 | 29.0 | 25.0 | 40.0 | 10.838 | O | 1 |
| A7150 | 5.0 | 30.0 | 25.0 | 40.0 | 10.495 | O | 1 |
| A7151 | 4.0 | 31.0 | 25.0 | 40.0 | 10.140 | O | 1 |
| A7152 | 3.0 | 32.0 | 25.0 | 40.0 | 9.785 | O | 1 |
| A7153 | 2.0 | 33.0 | 25.0 | 40.0 | 9.431 | O | 1 |
| A7154 | 1.0 | 34.0 | 25.0 | 40.0 | 9.076 | O | 1 |
| A7155 | 0.0 | 35.0 | 25.0 | 40.0 | 8.721 | O | 1 |
| A7156 | 35.0 | 10.0 | 5.0 | 50.0 | 19.070 | X | 1 |
| A7157 | 34.8 | 10.2 | 5.0 | 50.0 | 19.010 | X | 1 |
| A7158 | 34.7 | 10.3 | 5.0 | 50.0 | 18.980 | O | 1 |
| A7159 | 34.0 | 11.0 | 5.0 | 50.0 | 18.769 | O | 1 |
| A7160 | 30.0 | 15.0 | 5.0 | 50.0 | 17.566 | O | 1 |
| A7161 | 20.0 | 25.0 | 5.0 | 50.0 | 14.558 | O | 1 |
| A7162 | 15.0 | 30.0 | 5.0 | 50.0 | 13.053 | O | 1 |
| A7163 | 10.0 | 35.0 | 5.0 | 50.0 | 11.549 | O | 1 |
| A7164 | 9.0 | 36.0 | 5.0 | 50.0 | 11.248 | O | 1 |
| A7165 | 8.0 | 37.0 | 5.0 | 50.0 | 10.948 | O | 1 |
| A7166 | 7.0 | 38.0 | 5.0 | 50.0 | 10.647 | O | 1 |
| A7167 | 6.0 | 39.0 | 5.0 | 50.0 | 10.346 | O | 1 |
| A7168 | 5.0 | 40.0 | 5.0 | 50.0 | 10.045 | O | 1 |
| A7169 | 4.0 | 41.0 | 5.0 | 50.0 | 9.706 | O | 1 |
| A7170 | 3.0 | 42.0 | 5.0 | 50.0 | 9.352 | O | 1 |
| A7171 | 2.0 | 43.0 | 5.0 | 50.0 | 8.997 | O | 1 |
| A7172 | 1.0 | 44.0 | 5.0 | 50.0 | 8.642 | O | 1 |
| A7173 | 0.0 | 45.0 | 5.0 | 50.0 | 8.288 | O | 1 |
| A7174 | 36.0 | 4.0 | 10.0 | 50.0 | 19.121 | X | 1 |
| A7175 | 35.6 | 4.4 | 10.0 | 50.0 | 19.001 | X | 1 |
| A7176 | 35.5 | 4.5 | 10.0 | 50.0 | 18.971 | O | 1 |
| A7177 | 35.0 | 5.0 | 10.0 | 50.0 | 18.820 | O | 1 |
| A7178 | 30.0 | 10.0 | 10.0 | 50.0 | 17.316 | O | 1 |
| A7179 | 20.0 | 20.0 | 10.0 | 50.0 | 14.308 | O | 1 |
| A7180 | 15.0 | 25.0 | 10.0 | 50.0 | 12.804 | O | 1 |
| A7181 | 10.0 | 30.0 | 10.0 | 50.0 | 11.299 | O | 1 |
| A7182 | 9.0 | 31.0 | 10.0 | 50.0 | 10.999 | O | 1 |
| A7183 | 8.0 | 32.0 | 10.0 | 50.0 | 10.698 | O | 1 |
| A7184 | 7.0 | 33.0 | 10.0 | 50.0 | 10.397 | O | 1 |
| A7185 | 6.0 | 34.0 | 10.0 | 50.0 | 10.096 | O | 1 |
| A7186 | 5.0 | 35.0 | 10.0 | 50.0 | 9.785 | O | 1 |
| A7187 | 4.0 | 36.0 | 10.0 | 50.0 | 9.430 | O | 1 |
| A7188 | 3.0 | 37.0 | 10.0 | 50.0 | 9.076 | O | 1 |
| A7189 | 2.0 | 38.0 | 10.0 | 50.0 | 8.721 | O | 1 |
| A7190 | 1.0 | 39.0 | 10.0 | 50.0 | 8.366 | O | 1 |
| A7191 | 0.0 | 40.0 | 10.0 | 50.0 | 8.012 | O | 1 |

Tables 359 to 382 show the composition, combustion heat amount, and GWP of the working medium of a four-component system of propane, HFO-1132(E), HFO-1234ze(E), and HFC-32.

[Table 359]

EP 4 442 787 A1

| Case | propane | HFO-1132(E) | HFO-1234ze(E) | HFC-32 | Heat of Combustion | Evaluation | GWP |
|---|---|---|---|---|---|---|---|
| A7192 | 11.0 | 82.0 | 5.0 | 2.0 | 19.147 | X | 15 |
| A7193 | 10.6 | 82.4 | 5.0 | 2.0 | 19.026 | X | 15 |
| A7194 | 10.5 | 82.5 | 5.0 | 2.0 | 18.996 | O | 15 |
| A7195 | 10.0 | 83.0 | 5.0 | 2.0 | 18.846 | O | 15 |
| A7196 | 9.0 | 84.0 | 5.0 | 2.0 | 18.545 | O | 15 |
| A7197 | 8.0 | 85.0 | 5.0 | 2.0 | 18.244 | O | 15 |
| A7198 | 7.0 | 86.0 | 5.0 | 2.0 | 17.943 | O | 15 |
| A7199 | 6.0 | 87.0 | 5.0 | 2.0 | 17.642 | O | 15 |
| A7200 | 5.0 | 88.0 | 5.0 | 2.0 | 17.342 | O | 15 |
| A7201 | 4.0 | 89.0 | 5.0 | 2.0 | 17.041 | O | 15 |
| A7202 | 3.0 | 90.0 | 5.0 | 2.0 | 16.740 | O | 15 |
| A7203 | 2.0 | 91.0 | 5.0 | 2.0 | 16.439 | O | 15 |
| A7204 | 1.0 | 92.0 | 5.0 | 2.0 | 16.138 | O | 15 |
| A7205 | 0.0 | 93.0 | 5.0 | 2.0 | 15.811 | O | 15 |
| A7206 | 12.0 | 76.0 | 10.0 | 2.0 | 19.168 | X | 15 |
| A7207 | 11.5 | 76.5 | 10.0 | 2.0 | 19.017 | X | 15 |
| A7208 | 11.4 | 76.6 | 10.0 | 2.0 | 18.987 | O | 15 |
| A7209 | 11.0 | 77.0 | 10.0 | 2.0 | 18.867 | O | 15 |
| A7210 | 10.0 | 78.0 | 10.0 | 2.0 | 18.566 | O | 15 |
| A7211 | 9.0 | 79.0 | 10.0 | 2.0 | 18.265 | O | 15 |
| A7212 | 8.0 | 80.0 | 10.0 | 2.0 | 17.964 | O | 15 |
| A7213 | 7.0 | 81.0 | 10.0 | 2.0 | 17.664 | O | 15 |
| A7214 | 6.0 | 82.0 | 10.0 | 2.0 | 17.363 | O | 15 |
| A7215 | 5.0 | 83.0 | 10.0 | 2.0 | 17.062 | O | 15 |
| A7216 | 4.0 | 84.0 | 10.0 | 2.0 | 16.761 | O | 15 |
| A7217 | 3.0 | 85.0 | 10.0 | 2.0 | 16.460 | O | 15 |
| A7218 | 2.0 | 86.0 | 10.0 | 2.0 | 16.159 | O | 15 |
| A7219 | 1.0 | 87.0 | 10.0 | 2.0 | 15.859 | O | 15 |
| A7220 | 0.0 | 88.0 | 10.0 | 2.0 | 15.506 | O | 15 |
| A7221 | 13.0 | 70.0 | 15.0 | 2.0 | 19.189 | X | 15 |
| A7222 | 12.4 | 70.6 | 15.0 | 2.0 | 19.008 | X | 15 |
| A7223 | 12.3 | 70.7 | 15.0 | 2.0 | 18.978 | O | 15 |
| A7224 | 10.0 | 73.0 | 15.0 | 2.0 | 18.286 | O | 15 |
| A7225 | 9.0 | 74.0 | 15.0 | 2.0 | 17.986 | O | 15 |
| A7226 | 8.0 | 75.0 | 15.0 | 2.0 | 17.685 | O | 15 |
| A7227 | 7.0 | 76.0 | 15.0 | 2.0 | 17.384 | O | 15 |
| A7228 | 6.0 | 77.0 | 15.0 | 2.0 | 17.083 | O | 15 |
| A7229 | 5.0 | 78.0 | 15.0 | 2.0 | 16.782 | O | 15 |
| A7230 | 4.0 | 79.0 | 15.0 | 2.0 | 16.481 | O | 15 |
| A7231 | 3.0 | 80.0 | 15.0 | 2.0 | 16.181 | O | 15 |
| A7232 | 2.0 | 81.0 | 15.0 | 2.0 | 15.880 | O | 15 |
| A7233 | 1.0 | 82.0 | 15.0 | 2.0 | 15.555 | O | 15 |
| A7234 | 0.0 | 83.0 | 15.0 | 2.0 | 15.200 | O | 15 |
| A7235 | 14.0 | 64.0 | 20.0 | 2.0 | 19.210 | X | 15 |
| A7236 | 13.3 | 64.7 | 20.0 | 2.0 | 19.000 | X | 15 |
| A7237 | 13.2 | 64.8 | 20.0 | 2.0 | 18.969 | O | 15 |
| A7238 | 13.0 | 65.0 | 20.0 | 2.0 | 18.909 | O | 15 |
| A7239 | 10.0 | 68.0 | 20.0 | 2.0 | 18.007 | O | 15 |
| A7240 | 9.0 | 69.0 | 20.0 | 2.0 | 17.706 | O | 15 |
| A7241 | 8.0 | 70.0 | 20.0 | 2.0 | 17.405 | O | 15 |

[Table 360]

| A7242 | 7.0 | 71.0 | 20.0 | 2.0 | 17.104 | O | 15 |
|---|---|---|---|---|---|---|---|
| A7243 | 6.0 | 72.0 | 20.0 | 2.0 | 16.803 | O | 15 |
| A7244 | 5.0 | 73.0 | 20.0 | 2.0 | 16.503 | O | 15 |
| A7245 | 4.0 | 74.0 | 20.0 | 2.0 | 16.202 | O | 15 |
| A7246 | 3.0 | 75.0 | 20.0 | 2.0 | 15.901 | O | 15 |
| A7247 | 2.0 | 76.0 | 20.0 | 2.0 | 15.600 | O | 15 |
| A7248 | 1.0 | 77.0 | 20.0 | 2.0 | 15.249 | O | 15 |
| A7249 | 0.0 | 78.0 | 20.0 | 2.0 | 14.894 | O | 15 |
| A7250 | 15.0 | 58.0 | 25.0 | 2.0 | 19.231 | X | 15 |
| A7251 | 14.3 | 58.7 | 25.0 | 2.0 | 19.021 | X | 15 |
| A7252 | 14.2 | 58.8 | 25.0 | 2.0 | 18.991 | O | 15 |
| A7253 | 14.0 | 59.0 | 25.0 | 2.0 | 18.931 | O | 15 |
| A7254 | 10.0 | 63.0 | 25.0 | 2.0 | 17.727 | O | 15 |
| A7255 | 9.0 | 64.0 | 25.0 | 2.0 | 17.426 | O | 15 |
| A7256 | 8.0 | 65.0 | 25.0 | 2.0 | 17.126 | O | 15 |
| A7257 | 7.0 | 66.0 | 25.0 | 2.0 | 16.825 | O | 15 |
| A7258 | 6.0 | 67.0 | 25.0 | 2.0 | 16.524 | O | 15 |
| A7259 | 5.0 | 68.0 | 25.0 | 2.0 | 16.223 | O | 15 |
| A7260 | 4.0 | 69.0 | 25.0 | 2.0 | 15.922 | O | 15 |
| A7261 | 3.0 | 70.0 | 25.0 | 2.0 | 15.621 | O | 15 |
| A7262 | 2.0 | 71.0 | 25.0 | 2.0 | 15.298 | O | 15 |
| A7263 | 1.0 | 72.0 | 25.0 | 2.0 | 14.943 | O | 15 |
| A7264 | 0.0 | 73.0 | 25.0 | 2.0 | 14.589 | O | 15 |
| A7265 | 16.0 | 52.0 | 30.0 | 2.0 | 19.253 | X | 15 |
| A7266 | 15.2 | 52.8 | 30.0 | 2.0 | 19.012 | X | 15 |
| A7267 | 15.1 | 52.9 | 30.0 | 2.0 | 18.982 | O | 15 |
| A7268 | 15.0 | 53.0 | 30.0 | 2.0 | 18.952 | O | 15 |
| A7269 | 10.0 | 58.0 | 30.0 | 2.0 | 17.448 | O | 15 |
| A7270 | 9.0 | 59.0 | 30.0 | 2.0 | 17.147 | O | 15 |
| A7271 | 8.0 | 60.0 | 30.0 | 2.0 | 16.846 | O | 15 |
| A7272 | 7.0 | 61.0 | 30.0 | 2.0 | 16.545 | O | 15 |
| A7273 | 6.0 | 62.0 | 30.0 | 2.0 | 16.244 | O | 15 |
| A7274 | 5.0 | 63.0 | 30.0 | 2.0 | 15.943 | O | 15 |
| A7275 | 4.0 | 64.0 | 30.0 | 2.0 | 15.643 | O | 15 |
| A7276 | 3.0 | 65.0 | 30.0 | 2.0 | 15.342 | O | 15 |
| A7277 | 2.0 | 66.0 | 30.0 | 2.0 | 14.992 | O | 15 |
| A7278 | 1.0 | 67.0 | 30.0 | 2.0 | 14.638 | O | 15 |
| A7279 | 0.0 | 68.0 | 30.0 | 2.0 | 14.283 | O | 15 |
| A7280 | 17.0 | 46.0 | 35.0 | 2.0 | 19.274 | X | 15 |
| A7281 | 16.1 | 46.9 | 35.0 | 2.0 | 19.003 | X | 15 |
| A7282 | 16.0 | 47.0 | 35.0 | 2.0 | 18.973 | O | 15 |
| A7283 | 15.0 | 48.0 | 35.0 | 2.0 | 18.672 | O | 15 |
| A7284 | 10.0 | 53.0 | 35.0 | 2.0 | 17.168 | O | 15 |
| A7285 | 9.0 | 54.0 | 35.0 | 2.0 | 16.867 | O | 15 |
| A7286 | 8.0 | 55.0 | 35.0 | 2.0 | 16.566 | O | 15 |
| A7287 | 7.0 | 56.0 | 35.0 | 2.0 | 16.265 | O | 15 |
| A7288 | 6.0 | 57.0 | 35.0 | 2.0 | 15.965 | O | 15 |
| A7289 | 5.0 | 58.0 | 35.0 | 2.0 | 15.664 | O | 15 |
| A7290 | 4.0 | 59.0 | 35.0 | 2.0 | 15.363 | O | 15 |
| A7291 | 3.0 | 60.0 | 35.0 | 2.0 | 15.041 | O | 15 |

[Table 361]

| A7292 | 2.0 | 61.0 | 35.0 | 2.0 | 14.687 | O | 15 |
|---|---|---|---|---|---|---|---|
| A7293 | 1.0 | 62.0 | 35.0 | 2.0 | 14.332 | O | 15 |
| A7294 | 0.0 | 63.0 | 35.0 | 2.0 | 13.977 | O | 15 |
| A7295 | 18.0 | 40.0 | 40.0 | 2.0 | 19.295 | X | 15 |
| A7296 | 17.1 | 40.9 | 40.0 | 2.0 | 19.024 | X | 15 |
| A7297 | 17.0 | 41.0 | 40.0 | 2.0 | 18.994 | O | 15 |
| A7298 | 15.0 | 43.0 | 40.0 | 2.0 | 18.392 | O | 15 |
| A7299 | 10.0 | 48.0 | 40.0 | 2.0 | 16.888 | O | 15 |
| A7300 | 9.0 | 49.0 | 40.0 | 2.0 | 16.587 | O | 15 |
| A7301 | 8.0 | 50.0 | 40.0 | 2.0 | 16.287 | O | 15 |
| A7302 | 7.0 | 51.0 | 40.0 | 2.0 | 15.986 | O | 15 |
| A7303 | 6.0 | 52.0 | 40.0 | 2.0 | 15.685 | O | 15 |
| A7304 | 5.0 | 53.0 | 40.0 | 2.0 | 15.384 | O | 15 |
| A7305 | 4.0 | 54.0 | 40.0 | 2.0 | 15.083 | O | 15 |
| A7306 | 3.0 | 55.0 | 40.0 | 2.0 | 14.736 | O | 15 |
| A7307 | 2.0 | 56.0 | 40.0 | 2.0 | 14.381 | O | 15 |
| A7308 | 1.0 | 57.0 | 40.0 | 2.0 | 14.026 | O | 15 |
| A7309 | 0.0 | 58.0 | 40.0 | 2.0 | 13.672 | O | 15 |
| A7310 | 18.0 | 35.0 | 45.0 | 2.0 | 19.015 | X | 15 |
| A7311 | 17.9 | 35.1 | 45.0 | 2.0 | 18.985 | O | 15 |
| A7312 | 17.0 | 36.0 | 45.0 | 2.0 | 18.714 | O | 15 |
| A7313 | 15.0 | 38.0 | 45.0 | 2.0 | 18.113 | O | 15 |
| A7314 | 10.0 | 43.0 | 45.0 | 2.0 | 16.609 | O | 15 |
| A7315 | 9.0 | 44.0 | 45.0 | 2.0 | 16.308 | O | 15 |
| A7316 | 8.0 | 45.0 | 45.0 | 2.0 | 16.007 | O | 15 |
| A7317 | 7.0 | 46.0 | 45.0 | 2.0 | 15.706 | O | 15 |
| A7318 | 6.0 | 47.0 | 45.0 | 2.0 | 15.405 | O | 15 |
| A7319 | 5.0 | 48.0 | 45.0 | 2.0 | 15.105 | O | 15 |
| A7320 | 4.0 | 49.0 | 45.0 | 2.0 | 14.785 | O | 15 |
| A7321 | 3.0 | 50.0 | 45.0 | 2.0 | 14.430 | O | 15 |
| A7322 | 2.0 | 51.0 | 45.0 | 2.0 | 14.075 | O | 15 |
| A7323 | 1.0 | 52.0 | 45.0 | 2.0 | 13.721 | O | 15 |
| A7324 | 0.0 | 53.0 | 45.0 | 2.0 | 13.366 | O | 15 |
| A7325 | 19.0 | 29.0 | 50.0 | 2.0 | 19.037 | X | 15 |
| A7326 | 18.9 | 29.1 | 50.0 | 2.0 | 19.006 | X | 15 |
| A7327 | 18.8 | 29.2 | 50.0 | 2.0 | 18.976 | O | 15 |
| A7328 | 18.0 | 30.0 | 50.0 | 2.0 | 18.736 | O | 15 |
| A7329 | 15.0 | 33.0 | 50.0 | 2.0 | 17.833 | O | 15 |
| A7330 | 10.0 | 38.0 | 50.0 | 2.0 | 16.329 | O | 15 |
| A7331 | 9.0 | 39.0 | 50.0 | 2.0 | 16.028 | O | 15 |
| A7332 | 8.0 | 40.0 | 50.0 | 2.0 | 15.727 | O | 15 |
| A7333 | 7.0 | 41.0 | 50.0 | 2.0 | 15.427 | O | 15 |
| A7334 | 6.0 | 42.0 | 50.0 | 2.0 | 15.126 | O | 15 |
| A7335 | 5.0 | 43.0 | 50.0 | 2.0 | 14.825 | O | 15 |
| A7336 | 4.0 | 44.0 | 50.0 | 2.0 | 14.479 | O | 15 |
| A7337 | 3.0 | 45.0 | 50.0 | 2.0 | 14.124 | O | 15 |
| A7338 | 2.0 | 46.0 | 50.0 | 2.0 | 13.770 | O | 15 |
| A7339 | 1.0 | 47.0 | 50.0 | 2.0 | 13.415 | O | 15 |
| A7340 | 0.0 | 48.0 | 50.0 | 2.0 | 13.060 | O | 15 |
| A7341 | 20.0 | 23.0 | 55.0 | 2.0 | 19.058 | X | 15 |

[Table 362]

381

| | | | | | | | |
|---|---|---|---|---|---|---|---|
| A7342 | 19.9 | 23.1 | 55.0 | 2.0 | 19.028 | X | 15 |
| A7343 | 19.8 | 23.2 | 55.0 | 2.0 | 18.998 | O | 15 |
| A7344 | 19.0 | 24.0 | 55.0 | 2.0 | 18.757 | O | 15 |
| A7345 | 15.0 | 28.0 | 55.0 | 2.0 | 17.554 | O | 15 |
| A7346 | 10.0 | 33.0 | 55.0 | 2.0 | 16.049 | O | 15 |
| A7347 | 9.0 | 34.0 | 55.0 | 2.0 | 15.749 | O | 15 |
| A7348 | 8.0 | 35.0 | 55.0 | 2.0 | 15.448 | O | 15 |
| A7349 | 7.0 | 36.0 | 55.0 | 2.0 | 15.147 | O | 15 |
| A7350 | 6.0 | 37.0 | 55.0 | 2.0 | 14.846 | O | 15 |
| A7351 | 5.0 | 38.0 | 55.0 | 2.0 | 14.528 | O | 15 |
| A7352 | 4.0 | 39.0 | 55.0 | 2.0 | 14.174 | O | 15 |
| A7353 | 3.0 | 40.0 | 55.0 | 2.0 | 13.819 | O | 15 |
| A7354 | 2.0 | 41.0 | 55.0 | 2.0 | 13.464 | O | 15 |
| A7355 | 1.0 | 42.0 | 55.0 | 2.0 | 13.109 | O | 15 |
| A7356 | 0.0 | 43.0 | 55.0 | 2.0 | 12.755 | O | 15 |
| A7357 | 21.0 | 17.0 | 60.0 | 2.0 | 19.079 | X | 15 |
| A7358 | 20.8 | 17.2 | 60.0 | 2.0 | 19.019 | X | 15 |
| A7359 | 20.7 | 17.3 | 60.0 | 2.0 | 18.989 | O | 15 |
| A7360 | 20.0 | 18.0 | 60.0 | 2.0 | 18.778 | O | 15 |
| A7361 | 15.0 | 23.0 | 60.0 | 2.0 | 17.274 | O | 15 |
| A7362 | 10.0 | 28.0 | 60.0 | 2.0 | 15.770 | O | 15 |
| A7363 | 9.0 | 29.0 | 60.0 | 2.0 | 15.469 | O | 15 |
| A7364 | 8.0 | 30.0 | 60.0 | 2.0 | 15.168 | O | 15 |
| A7365 | 7.0 | 31.0 | 60.0 | 2.0 | 14.867 | O | 15 |
| A7366 | 6.0 | 32.0 | 60.0 | 2.0 | 14.566 | O | 15 |
| A7367 | 5.0 | 33.0 | 60.0 | 2.0 | 14.223 | O | 15 |
| A7368 | 4.0 | 34.0 | 60.0 | 2.0 | 13.868 | O | 15 |
| A7369 | 3.0 | 35.0 | 60.0 | 2.0 | 13.513 | O | 15 |
| A7370 | 2.0 | 36.0 | 60.0 | 2.0 | 13.158 | O | 15 |
| A7371 | 1.0 | 37.0 | 60.0 | 2.0 | 12.804 | O | 15 |
| A7372 | 0.0 | 38.0 | 60.0 | 2.0 | 12.449 | O | 15 |
| A7373 | 22.0 | 11.0 | 65.0 | 2.0 | 19.100 | X | 15 |
| A7374 | 21.7 | 11.3 | 65.0 | 2.0 | 19.010 | X | 15 |
| A7375 | 21.6 | 11.4 | 65.0 | 2.0 | 18.980 | O | 15 |
| A7376 | 21.0 | 12.0 | 65.0 | 2.0 | 18.799 | O | 15 |
| A7377 | 20.0 | 13.0 | 65.0 | 2.0 | 18.498 | O | 15 |
| A7378 | 15.0 | 18.0 | 65.0 | 2.0 | 16.994 | O | 15 |
| A7379 | 10.0 | 23.0 | 65.0 | 2.0 | 15.490 | O | 15 |
| A7380 | 9.0 | 24.0 | 65.0 | 2.0 | 15.189 | O | 15 |
| A7381 | 8.0 | 25.0 | 65.0 | 2.0 | 14.889 | O | 15 |
| A7382 | 7.0 | 26.0 | 65.0 | 2.0 | 14.588 | O | 15 |
| A7383 | 6.0 | 27.0 | 65.0 | 2.0 | 14.272 | O | 15 |
| A7384 | 5.0 | 28.0 | 65.0 | 2.0 | 13.917 | O | 15 |
| A7385 | 4.0 | 29.0 | 65.0 | 2.0 | 13.562 | O | 15 |
| A7386 | 3.0 | 30.0 | 65.0 | 2.0 | 13.207 | O | 15 |
| A7387 | 2.0 | 31.0 | 65.0 | 2.0 | 12.853 | O | 15 |
| A7388 | 1.0 | 32.0 | 65.0 | 2.0 | 12.498 | O | 15 |
| A7389 | 0.0 | 33.0 | 65.0 | 2.0 | 12.143 | O | 15 |
| A7390 | 23.0 | 5.0 | 70.0 | 2.0 | 19.121 | X | 15 |
| A7391 | 22.6 | 5.4 | 70.0 | 2.0 | 19.001 | X | 15 |

[Table 363]

| A7392 | 22.5 | 5.5 | 70.0 | 2.0 | 18.971 | O | 15 |
|---|---|---|---|---|---|---|---|
| A7393 | 22.0 | 6.0 | 70.0 | 2.0 | 18.821 | O | 15 |
| A7394 | 20.0 | 8.0 | 70.0 | 2.0 | 18.219 | O | 15 |
| A7395 | 15.0 | 13.0 | 70.0 | 2.0 | 16.715 | O | 15 |
| A7396 | 10.0 | 18.0 | 70.0 | 2.0 | 15.211 | O | 15 |
| A7397 | 9.0 | 19.0 | 70.0 | 2.0 | 14.910 | O | 15 |
| A7398 | 8.0 | 20.0 | 70.0 | 2.0 | 14.609 | O | 15 |
| A7399 | 7.0 | 21.0 | 70.0 | 2.0 | 14.308 | O | 15 |
| A7400 | 6.0 | 22.0 | 70.0 | 2.0 | 13.966 | O | 15 |
| A7401 | 5.0 | 23.0 | 70.0 | 2.0 | 13.611 | O | 15 |
| A7402 | 4.0 | 24.0 | 70.0 | 2.0 | 13.257 | O | 15 |
| A7403 | 3.0 | 25.0 | 70.0 | 2.0 | 12.902 | O | 15 |
| A7404 | 2.0 | 26.0 | 70.0 | 2.0 | 12.547 | O | 15 |
| A7405 | 1.0 | 27.0 | 70.0 | 2.0 | 12.192 | O | 15 |
| A7406 | 0.0 | 28.0 | 70.0 | 2.0 | 11.838 | O | 15 |
| A7407 | 12.0 | 78.0 | 5.0 | 5.0 | 19.246 | X | 35 |
| A7408 | 11.2 | 78.8 | 5.0 | 5.0 | 19.006 | X | 35 |
| A7409 | 11.1 | 78.9 | 5.0 | 5.0 | 18.976 | O | 35 |
| A7410 | 11.0 | 79.0 | 5.0 | 5.0 | 18.945 | O | 35 |
| A7411 | 10.0 | 80.0 | 5.0 | 5.0 | 18.645 | O | 35 |
| A7412 | 9.0 | 81.0 | 5.0 | 5.0 | 18.344 | O | 35 |
| A7413 | 8.0 | 82.0 | 5.0 | 5.0 | 18.043 | O | 35 |
| A7414 | 7.0 | 83.0 | 5.0 | 5.0 | 17.742 | O | 35 |
| A7415 | 6.0 | 84.0 | 5.0 | 5.0 | 17.441 | O | 35 |
| A7416 | 5.0 | 85.0 | 5.0 | 5.0 | 17.140 | O | 35 |
| A7417 | 4.0 | 86.0 | 5.0 | 5.0 | 16.840 | O | 35 |
| A7418 | 3.0 | 87.0 | 5.0 | 5.0 | 16.539 | O | 35 |
| A7419 | 2.0 | 88.0 | 5.0 | 5.0 | 16.238 | O | 35 |
| A7420 | 1.0 | 89.0 | 5.0 | 5.0 | 15.937 | O | 35 |
| A7421 | 0.0 | 90.0 | 5.0 | 5.0 | 15.610 | O | 35 |
| A7422 | 13.0 | 72.0 | 10.0 | 5.0 | 19.267 | X | 35 |
| A7423 | 12.2 | 72.8 | 10.0 | 5.0 | 19.027 | X | 35 |
| A7424 | 12.1 | 72.9 | 10.0 | 5.0 | 18.997 | O | 35 |
| A7425 | 12.0 | 73.0 | 10.0 | 5.0 | 18.967 | O | 35 |
| A7426 | 10.0 | 75.0 | 10.0 | 5.0 | 18.365 | O | 35 |
| A7427 | 9.0 | 76.0 | 10.0 | 5.0 | 18.064 | O | 35 |
| A7428 | 8.0 | 77.0 | 10.0 | 5.0 | 17.763 | O | 35 |
| A7429 | 7.0 | 78.0 | 10.0 | 5.0 | 17.462 | O | 35 |
| A7430 | 6.0 | 79.0 | 10.0 | 5.0 | 17.162 | O | 35 |
| A7431 | 5.0 | 80.0 | 10.0 | 5.0 | 16.861 | O | 35 |
| A7432 | 4.0 | 81.0 | 10.0 | 5.0 | 16.560 | O | 35 |
| A7433 | 3.0 | 82.0 | 10.0 | 5.0 | 16.259 | O | 35 |
| A7434 | 2.0 | 83.0 | 10.0 | 5.0 | 15.958 | O | 35 |
| A7435 | 1.0 | 84.0 | 10.0 | 5.0 | 15.657 | O | 35 |
| A7436 | 0.0 | 85.0 | 10.0 | 5.0 | 15.305 | O | 35 |
| A7437 | 14.0 | 66.0 | 15.0 | 5.0 | 19.289 | X | 35 |
| A7438 | 13.1 | 66.9 | 15.0 | 5.0 | 19.018 | X | 35 |
| A7439 | 13.0 | 67.0 | 15.0 | 5.0 | 18.988 | O | 35 |
| A7440 | 10.0 | 70.0 | 15.0 | 5.0 | 18.085 | O | 35 |
| A7441 | 9.0 | 71.0 | 15.0 | 5.0 | 17.785 | O | 35 |

[Table 364]

| | | | | | | | |
|---|---|---|---|---|---|---|---|
| A7442 | 8.0 | 72.0 | 15.0 | 5.0 | 17.484 | O | 35 |
| A7443 | 7.0 | 73.0 | 15.0 | 5.0 | 17.183 | O | 35 |
| A7444 | 6.0 | 74.0 | 15.0 | 5.0 | 16.882 | O | 35 |
| A7445 | 5.0 | 75.0 | 15.0 | 5.0 | 16.581 | O | 35 |
| A7446 | 4.0 | 76.0 | 15.0 | 5.0 | 16.280 | O | 35 |
| A7447 | 3.0 | 77.0 | 15.0 | 5.0 | 15.980 | O | 35 |
| A7448 | 2.0 | 78.0 | 15.0 | 5.0 | 15.679 | O | 35 |
| A7449 | 1.0 | 79.0 | 15.0 | 5.0 | 15.354 | O | 35 |
| A7450 | 0.0 | 80.0 | 15.0 | 5.0 | 14.999 | O | 35 |
| A7451 | 14.0 | 61.0 | 20.0 | 5.0 | 19.009 | X | 35 |
| A7452 | 13.9 | 61.1 | 20.0 | 5.0 | 18.979 | O | 35 |
| A7453 | 13.0 | 62.0 | 20.0 | 5.0 | 18.708 | O | 35 |
| A7454 | 10.0 | 65.0 | 20.0 | 5.0 | 17.806 | O | 35 |
| A7455 | 9.0 | 66.0 | 20.0 | 5.0 | 17.505 | O | 35 |
| A7456 | 8.0 | 67.0 | 20.0 | 5.0 | 17.204 | O | 35 |
| A7457 | 7.0 | 68.0 | 20.0 | 5.0 | 16.903 | O | 35 |
| A7458 | 6.0 | 69.0 | 20.0 | 5.0 | 16.602 | O | 35 |
| A7459 | 5.0 | 70.0 | 20.0 | 5.0 | 16.302 | O | 35 |
| A7460 | 4.0 | 71.0 | 20.0 | 5.0 | 16.001 | O | 35 |
| A7461 | 3.0 | 72.0 | 20.0 | 5.0 | 15.700 | O | 35 |
| A7462 | 2.0 | 73.0 | 20.0 | 5.0 | 15.399 | O | 35 |
| A7463 | 1.0 | 74.0 | 20.0 | 5.0 | 15.048 | O | 35 |
| A7464 | 0.0 | 75.0 | 20.0 | 5.0 | 14.693 | O | 35 |
| A7465 | 15.0 | 55.0 | 25.0 | 5.0 | 19.030 | X | 35 |
| A7466 | 14.9 | 55.1 | 25.0 | 5.0 | 19.000 | X | 35 |
| A7467 | 14.8 | 55.2 | 25.0 | 5.0 | 18.970 | O | 35 |
| A7468 | 14.0 | 56.0 | 25.0 | 5.0 | 18.729 | O | 35 |
| A7469 | 10.0 | 60.0 | 25.0 | 5.0 | 17.526 | O | 35 |
| A7470 | 9.0 | 61.0 | 25.0 | 5.0 | 17.225 | O | 35 |
| A7471 | 8.0 | 62.0 | 25.0 | 5.0 | 16.924 | O | 35 |
| A7472 | 7.0 | 63.0 | 25.0 | 5.0 | 16.624 | O | 35 |
| A7473 | 6.0 | 64.0 | 25.0 | 5.0 | 16.323 | O | 35 |
| A7474 | 5.0 | 65.0 | 25.0 | 5.0 | 16.022 | O | 35 |
| A7475 | 4.0 | 66.0 | 25.0 | 5.0 | 15.721 | O | 35 |
| A7476 | 3.0 | 67.0 | 25.0 | 5.0 | 15.420 | O | 35 |
| A7477 | 2.0 | 68.0 | 25.0 | 5.0 | 15.097 | O | 35 |
| A7478 | 1.0 | 69.0 | 25.0 | 5.0 | 14.742 | O | 35 |
| A7479 | 0.0 | 70.0 | 25.0 | 5.0 | 14.388 | O | 35 |
| A7480 | 16.0 | 49.0 | 30.0 | 5.0 | 19.051 | X | 35 |
| A7481 | 15.9 | 49.1 | 30.0 | 5.0 | 19.021 | X | 35 |
| A7482 | 15.8 | 49.2 | 30.0 | 5.0 | 18.991 | O | 35 |
| A7483 | 15.0 | 50.0 | 30.0 | 5.0 | 18.751 | O | 35 |
| A7484 | 10.0 | 55.0 | 30.0 | 5.0 | 17.246 | O | 35 |
| A7485 | 9.0 | 56.0 | 30.0 | 5.0 | 16.946 | O | 35 |
| A7486 | 8.0 | 57.0 | 30.0 | 5.0 | 16.645 | O | 35 |
| A7487 | 7.0 | 58.0 | 30.0 | 5.0 | 16.344 | O | 35 |
| A7488 | 6.0 | 59.0 | 30.0 | 5.0 | 16.043 | O | 35 |
| A7489 | 5.0 | 60.0 | 30.0 | 5.0 | 15.742 | O | 35 |
| A7490 | 4.0 | 61.0 | 30.0 | 5.0 | 15.441 | O | 35 |
| A7491 | 3.0 | 62.0 | 30.0 | 5.0 | 15.141 | O | 35 |

[Table 365]

384

| A7492 | 2.0 | 63.0 | 30.0 | 5.0 | 14.791 | O | 35 |
|---|---|---|---|---|---|---|---|
| A7493 | 1.0 | 64.0 | 30.0 | 5.0 | 14.437 | O | 35 |
| A7494 | 0.0 | 65.0 | 30.0 | 5.0 | 14.082 | O | 35 |
| A7495 | 17.0 | 43.0 | 35.0 | 5.0 | 19.073 | X | 35 |
| A7496 | 16.8 | 43.2 | 35.0 | 5.0 | 19.012 | X | 35 |
| A7497 | 16.7 | 43.3 | 35.0 | 5.0 | 18.982 | O | 35 |
| A7498 | 16.0 | 44.0 | 35.0 | 5.0 | 18.772 | O | 35 |
| A7499 | 15.0 | 45.0 | 35.0 | 5.0 | 18.471 | O | 35 |
| A7500 | 10.0 | 50.0 | 35.0 | 5.0 | 16.967 | O | 35 |
| A7501 | 9.0 | 51.0 | 35.0 | 5.0 | 16.666 | O | 35 |
| A7502 | 8.0 | 52.0 | 35.0 | 5.0 | 16.365 | O | 35 |
| A7503 | 7.0 | 53.0 | 35.0 | 5.0 | 16.064 | O | 35 |
| A7504 | 6.0 | 54.0 | 35.0 | 5.0 | 15.764 | O | 35 |
| A7505 | 5.0 | 55.0 | 35.0 | 5.0 | 15.463 | O | 35 |
| A7506 | 4.0 | 56.0 | 35.0 | 5.0 | 15.162 | O | 35 |
| A7507 | 3.0 | 57.0 | 35.0 | 5.0 | 14.840 | O | 35 |
| A7508 | 2.0 | 58.0 | 35.0 | 5.0 | 14.486 | O | 35 |
| A7509 | 1.0 | 59.0 | 35.0 | 5.0 | 14.131 | O | 35 |
| A7510 | 0.0 | 60.0 | 35.0 | 5.0 | 13.776 | O | 35 |
| A7511 | 18.0 | 37.0 | 40.0 | 5.0 | 19.094 | X | 35 |
| A7512 | 17.7 | 37.3 | 40.0 | 5.0 | 19.004 | X | 35 |
| A7513 | 17.6 | 37.4 | 40.0 | 5.0 | 18.974 | O | 35 |
| A7514 | 17.0 | 38.0 | 40.0 | 5.0 | 18.793 | O | 35 |
| A7515 | 15.0 | 40.0 | 40.0 | 5.0 | 18.191 | O | 35 |
| A7516 | 10.0 | 45.0 | 40.0 | 5.0 | 16.687 | O | 35 |
| A7517 | 9.0 | 46.0 | 40.0 | 5.0 | 16.386 | O | 35 |
| A7518 | 8.0 | 47.0 | 40.0 | 5.0 | 16.086 | O | 35 |
| A7519 | 7.0 | 48.0 | 40.0 | 5.0 | 15.785 | O | 35 |
| A7520 | 6.0 | 49.0 | 40.0 | 5.0 | 15.484 | O | 35 |
| A7521 | 5.0 | 50.0 | 40.0 | 5.0 | 15.183 | O | 35 |
| A7522 | 4.0 | 51.0 | 40.0 | 5.0 | 14.882 | O | 35 |
| A7523 | 3.0 | 52.0 | 40.0 | 5.0 | 14.535 | O | 35 |
| A7524 | 2.0 | 53.0 | 40.0 | 5.0 | 14.180 | O | 35 |
| A7525 | 1.0 | 54.0 | 40.0 | 5.0 | 13.825 | O | 35 |
| A7526 | 0.0 | 55.0 | 40.0 | 5.0 | 13.471 | O | 35 |
| A7527 | 19.0 | 31.0 | 45.0 | 5.0 | 19.115 | X | 35 |
| A7528 | 18.7 | 31.3 | 45.0 | 5.0 | 19.025 | X | 35 |
| A7529 | 18.6 | 31.4 | 45.0 | 5.0 | 18.995 | O | 35 |
| A7530 | 18.0 | 32.0 | 45.0 | 5.0 | 18.814 | O | 35 |
| A7531 | 15.0 | 35.0 | 45.0 | 5.0 | 17.912 | O | 35 |
| A7532 | 10.0 | 40.0 | 45.0 | 5.0 | 16.408 | O | 35 |
| A7533 | 9.0 | 41.0 | 45.0 | 5.0 | 16.107 | O | 35 |
| A7534 | 8.0 | 42.0 | 45.0 | 5.0 | 15.806 | O | 35 |
| A7535 | 7.0 | 43.0 | 45.0 | 5.0 | 15.505 | O | 35 |
| A7536 | 6.0 | 44.0 | 45.0 | 5.0 | 15.204 | O | 35 |
| A7537 | 5.0 | 45.0 | 45.0 | 5.0 | 14.903 | O | 35 |
| A7538 | 4.0 | 46.0 | 45.0 | 5.0 | 14.584 | O | 35 |
| A7539 | 3.0 | 47.0 | 45.0 | 5.0 | 14.229 | O | 35 |
| A7540 | 2.0 | 48.0 | 45.0 | 5.0 | 13.874 | O | 35 |
| A7541 | 1.0 | 49.0 | 45.0 | 5.0 | 13.520 | O | 35 |

[Table 366]

| | | | | | | | |
|---|---|---|---|---|---|---|---|
| A7542 | 0.0 | 50.0 | 45.0 | 5.0 | 13.165 | O | 35 |
| A7543 | 20.0 | 25.0 | 50.0 | 5.0 | 19.136 | X | 35 |
| A7544 | 19.6 | 25.4 | 50.0 | 5.0 | 19.016 | X | 35 |
| A7545 | 19.5 | 25.5 | 50.0 | 5.0 | 18.986 | O | 35 |
| A7546 | 19.0 | 26.0 | 50.0 | 5.0 | 18.835 | O | 35 |
| A7547 | 15.0 | 30.0 | 50.0 | 5.0 | 17.632 | O | 35 |
| A7548 | 10.0 | 35.0 | 50.0 | 5.0 | 16.128 | O | 35 |
| A7549 | 9.0 | 36.0 | 50.0 | 5.0 | 15.827 | O | 35 |
| A7550 | 8.0 | 37.0 | 50.0 | 5.0 | 15.526 | O | 35 |
| A7551 | 7.0 | 38.0 | 50.0 | 5.0 | 15.225 | O | 35 |
| A7552 | 6.0 | 39.0 | 50.0 | 5.0 | 14.925 | O | 35 |
| A7553 | 5.0 | 40.0 | 50.0 | 5.0 | 14.624 | O | 35 |
| A7554 | 4.0 | 41.0 | 50.0 | 5.0 | 14.278 | O | 35 |
| A7555 | 3.0 | 42.0 | 50.0 | 5.0 | 13.923 | O | 35 |
| A7556 | 2.0 | 43.0 | 50.0 | 5.0 | 13.569 | O | 35 |
| A7557 | 1.0 | 44.0 | 50.0 | 5.0 | 13.214 | O | 35 |
| A7558 | 0.0 | 45.0 | 50.0 | 5.0 | 12.859 | O | 35 |
| A7559 | 21.0 | 19.0 | 55.0 | 5.0 | 19.157 | X | 35 |
| A7560 | 20.5 | 19.5 | 55.0 | 5.0 | 19.007 | X | 35 |
| A7561 | 20.4 | 19.6 | 55.0 | 5.0 | 18.977 | O | 35 |
| A7562 | 20.0 | 20.0 | 55.0 | 5.0 | 18.857 | O | 35 |
| A7563 | 15.0 | 25.0 | 55.0 | 5.0 | 17.352 | O | 35 |
| A7564 | 10.0 | 30.0 | 55.0 | 5.0 | 15.848 | O | 35 |
| A7565 | 9.0 | 31.0 | 55.0 | 5.0 | 15.547 | O | 35 |
| A7566 | 8.0 | 32.0 | 55.0 | 5.0 | 15.247 | O | 35 |
| A7567 | 7.0 | 33.0 | 55.0 | 5.0 | 14.946 | O | 35 |
| A7568 | 6.0 | 34.0 | 55.0 | 5.0 | 14.645 | O | 35 |
| A7569 | 5.0 | 35.0 | 55.0 | 5.0 | 14.327 | O | 35 |
| A7570 | 4.0 | 36.0 | 55.0 | 5.0 | 13.972 | O | 35 |
| A7571 | 3.0 | 37.0 | 55.0 | 5.0 | 13.618 | O | 35 |
| A7572 | 2.0 | 38.0 | 55.0 | 5.0 | 13.263 | O | 35 |
| A7573 | 1.0 | 39.0 | 55.0 | 5.0 | 12.908 | O | 35 |
| A7574 | 0.0 | 40.0 | 55.0 | 5.0 | 12.554 | O | 35 |
| A7575 | 22.0 | 13.0 | 60.0 | 5.0 | 19.179 | X | 35 |
| A7576 | 21.5 | 13.5 | 60.0 | 5.0 | 19.028 | X | 35 |
| A7577 | 21.4 | 13.6 | 60.0 | 5.0 | 18.998 | O | 35 |
| A7578 | 21.0 | 14.0 | 60.0 | 5.0 | 18.878 | O | 35 |
| A7579 | 20.0 | 15.0 | 60.0 | 5.0 | 18.577 | O | 35 |
| A7580 | 15.0 | 20.0 | 60.0 | 5.0 | 17.073 | O | 35 |
| A7581 | 10.0 | 25.0 | 60.0 | 5.0 | 15.569 | O | 35 |
| A7582 | 9.0 | 26.0 | 60.0 | 5.0 | 15.268 | O | 35 |
| A7583 | 8.0 | 27.0 | 60.0 | 5.0 | 14.967 | O | 35 |
| A7584 | 7.0 | 28.0 | 60.0 | 5.0 | 14.666 | O | 35 |
| A7585 | 6.0 | 29.0 | 60.0 | 5.0 | 14.365 | O | 35 |
| A7586 | 5.0 | 30.0 | 60.0 | 5.0 | 14.021 | O | 35 |
| A7587 | 4.0 | 31.0 | 60.0 | 5.0 | 13.667 | O | 35 |
| A7588 | 3.0 | 32.0 | 60.0 | 5.0 | 13.312 | O | 35 |
| A7589 | 2.0 | 33.0 | 60.0 | 5.0 | 12.957 | O | 35 |
| A7590 | 1.0 | 34.0 | 60.0 | 5.0 | 12.603 | O | 35 |
| A7591 | 0.0 | 35.0 | 60.0 | 5.0 | 12.248 | O | 35 |

[Table 367]

| A7592 | 23.0 | 7.0 | 65.0 | 5.0 | 19.200 | X | 35 |
|---|---|---|---|---|---|---|---|
| A7593 | 22.4 | 7.6 | 65.0 | 5.0 | 19.019 | X | 35 |
| A7594 | 22.3 | 7.7 | 65.0 | 5.0 | 18.989 | O | 35 |
| A7595 | 22.0 | 8.0 | 65.0 | 5.0 | 18.899 | O | 35 |
| A7596 | 20.0 | 10.0 | 65.0 | 5.0 | 18.297 | O | 35 |
| A7597 | 15.0 | 15.0 | 65.0 | 5.0 | 16.793 | O | 35 |
| A7598 | 10.0 | 20.0 | 65.0 | 5.0 | 15.289 | O | 35 |
| A7599 | 9.0 | 21.0 | 65.0 | 5.0 | 14.988 | O | 35 |
| A7600 | 8.0 | 22.0 | 65.0 | 5.0 | 14.687 | O | 35 |
| A7601 | 7.0 | 23.0 | 65.0 | 5.0 | 14.387 | O | 35 |
| A7602 | 6.0 | 24.0 | 65.0 | 5.0 | 14.070 | O | 35 |
| A7603 | 5.0 | 25.0 | 65.0 | 5.0 | 13.716 | O | 35 |
| A7604 | 4.0 | 26.0 | 65.0 | 5.0 | 13.361 | O | 35 |
| A7605 | 3.0 | 27.0 | 65.0 | 5.0 | 13.006 | O | 35 |
| A7606 | 2.0 | 28.0 | 65.0 | 5.0 | 12.652 | O | 35 |
| A7607 | 1.0 | 29.0 | 65.0 | 5.0 | 12.297 | O | 35 |
| A7608 | 0.0 | 30.0 | 65.0 | 5.0 | 11.942 | O | 35 |
| A7609 | 24.0 | 1.0 | 70.0 | 5.0 | 19.221 | X | 35 |
| A7610 | 23.3 | 1.7 | 70.0 | 5.0 | 19.010 | X | 35 |
| A7611 | 23.2 | 1.8 | 70.0 | 5.0 | 18.980 | O | 35 |
| A7612 | 23.0 | 2.0 | 70.0 | 5.0 | 18.920 | O | 35 |
| A7613 | 20.0 | 5.0 | 70.0 | 5.0 | 18.018 | O | 35 |
| A7614 | 15.0 | 10.0 | 70.0 | 5.0 | 16.514 | O | 35 |
| A7615 | 10.0 | 15.0 | 70.0 | 5.0 | 15.009 | O | 35 |
| A7616 | 9.0 | 16.0 | 70.0 | 5.0 | 14.709 | O | 35 |
| A7617 | 8.0 | 17.0 | 70.0 | 5.0 | 14.408 | O | 35 |
| A7618 | 7.0 | 18.0 | 70.0 | 5.0 | 14.107 | O | 35 |
| A7619 | 6.0 | 19.0 | 70.0 | 5.0 | 13.765 | O | 35 |
| A7620 | 5.0 | 20.0 | 70.0 | 5.0 | 13.410 | O | 35 |
| A7621 | 4.0 | 21.0 | 70.0 | 5.0 | 13.055 | O | 35 |
| A7622 | 3.0 | 22.0 | 70.0 | 5.0 | 12.701 | O | 35 |
| A7623 | 2.0 | 23.0 | 70.0 | 5.0 | 12.346 | O | 35 |
| A7624 | 1.0 | 24.0 | 70.0 | 5.0 | 11.991 | O | 35 |
| A7625 | 0.0 | 25.0 | 70.0 | 5.0 | 11.637 | O | 35 |
| A7626 | 13.0 | 72.0 | 5.0 | 10.0 | 19.212 | X | 69 |
| A7627 | 12.3 | 72.7 | 5.0 | 10.0 | 19.001 | X | 69 |
| A7628 | 12.2 | 72.8 | 5.0 | 10.0 | 18.971 | O | 69 |
| A7629 | 12.0 | 73.0 | 5.0 | 10.0 | 18.911 | O | 69 |
| A7630 | 10.0 | 75.0 | 5.0 | 10.0 | 18.309 | O | 69 |
| A7631 | 9.0 | 76.0 | 5.0 | 10.0 | 18.009 | O | 69 |
| A7632 | 8.0 | 77.0 | 5.0 | 10.0 | 17.708 | O | 69 |
| A7633 | 7.0 | 78.0 | 5.0 | 10.0 | 17.407 | O | 69 |
| A7634 | 6.0 | 79.0 | 5.0 | 10.0 | 17.106 | O | 69 |
| A7635 | 5.0 | 80.0 | 5.0 | 10.0 | 16.805 | O | 69 |
| A7636 | 4.0 | 81.0 | 5.0 | 10.0 | 16.504 | O | 69 |
| A7637 | 3.0 | 82.0 | 5.0 | 10.0 | 16.204 | O | 69 |
| A7638 | 2.0 | 83.0 | 5.0 | 10.0 | 15.903 | O | 69 |
| A7639 | 1.0 | 84.0 | 5.0 | 10.0 | 15.602 | O | 69 |
| A7640 | 0.0 | 85.0 | 5.0 | 10.0 | 15.275 | O | 69 |
| A7641 | 14.0 | 66.0 | 10.0 | 10.0 | 19.233 | X | 69 |

[Table 368]

| A7642 | 13.3 | 66.7 | 10.0 | 10.0 | 19.023 | X | 69 |
|---|---|---|---|---|---|---|---|
| A7643 | 13.2 | 66.8 | 10.0 | 10.0 | 18.992 | O | 69 |
| A7644 | 13.0 | 67.0 | 10.0 | 10.0 | 18.932 | O | 69 |
| A7645 | 10.0 | 70.0 | 10.0 | 10.0 | 18.030 | O | 69 |
| A7646 | 9.0 | 71.0 | 10.0 | 10.0 | 17.729 | O | 69 |
| A7647 | 8.0 | 72.0 | 10.0 | 10.0 | 17.428 | O | 69 |
| A7648 | 7.0 | 73.0 | 10.0 | 10.0 | 17.127 | O | 69 |
| A7649 | 6.0 | 74.0 | 10.0 | 10.0 | 16.826 | O | 69 |
| A7650 | 5.0 | 75.0 | 10.0 | 10.0 | 16.526 | O | 69 |
| A7651 | 4.0 | 76.0 | 10.0 | 10.0 | 16.225 | O | 69 |
| A7652 | 3.0 | 77.0 | 10.0 | 10.0 | 15.924 | O | 69 |
| A7653 | 2.0 | 78.0 | 10.0 | 10.0 | 15.623 | O | 69 |
| A7654 | 1.0 | 79.0 | 10.0 | 10.0 | 15.322 | O | 69 |
| A7655 | 0.0 | 80.0 | 10.0 | 10.0 | 14.969 | O | 69 |
| A7656 | 15.0 | 60.0 | 15.0 | 10.0 | 19.254 | X | 69 |
| A7657 | 14.2 | 60.8 | 15.0 | 10.0 | 19.014 | X | 69 |
| A7658 | 14.1 | 60.9 | 15.0 | 10.0 | 18.984 | O | 69 |
| A7659 | 14.0 | 61.0 | 15.0 | 10.0 | 18.953 | O | 69 |
| A7660 | 10.0 | 65.0 | 15.0 | 10.0 | 17.750 | O | 69 |
| A7661 | 9.0 | 66.0 | 15.0 | 10.0 | 17.449 | O | 69 |
| A7662 | 8.0 | 67.0 | 15.0 | 10.0 | 17.149 | O | 69 |
| A7663 | 7.0 | 68.0 | 15.0 | 10.0 | 16.848 | O | 69 |
| A7664 | 6.0 | 69.0 | 15.0 | 10.0 | 16.547 | O | 69 |
| A7665 | 5.0 | 70.0 | 15.0 | 10.0 | 16.246 | O | 69 |
| A7666 | 4.0 | 71.0 | 15.0 | 10.0 | 15.945 | O | 69 |
| A7667 | 3.0 | 72.0 | 15.0 | 10.0 | 15.644 | O | 69 |
| A7668 | 2.0 | 73.0 | 15.0 | 10.0 | 15.344 | O | 69 |
| A7669 | 1.0 | 74.0 | 15.0 | 10.0 | 15.018 | O | 69 |
| A7670 | 0.0 | 75.0 | 15.0 | 10.0 | 14.664 | O | 69 |
| A7671 | 16.0 | 54.0 | 20.0 | 10.0 | 19.276 | X | 69 |
| A7672 | 15.1 | 54.9 | 20.0 | 10.0 | 19.005 | X | 69 |
| A7673 | 15.0 | 55.0 | 20.0 | 10.0 | 18.975 | O | 69 |
| A7674 | 10.0 | 60.0 | 20.0 | 10.0 | 17.471 | O | 69 |
| A7675 | 9.0 | 61.0 | 20.0 | 10.0 | 17.170 | O | 69 |
| A7676 | 8.0 | 62.0 | 20.0 | 10.0 | 16.869 | O | 69 |
| A7677 | 7.0 | 63.0 | 20.0 | 10.0 | 16.568 | O | 69 |
| A7678 | 6.0 | 64.0 | 20.0 | 10.0 | 16.267 | O | 69 |
| A7679 | 5.0 | 65.0 | 20.0 | 10.0 | 15.966 | O | 69 |
| A7680 | 4.0 | 66.0 | 20.0 | 10.0 | 15.666 | O | 69 |
| A7681 | 3.0 | 67.0 | 20.0 | 10.0 | 15.365 | O | 69 |
| A7682 | 2.0 | 68.0 | 20.0 | 10.0 | 15.064 | O | 69 |
| A7683 | 1.0 | 69.0 | 20.0 | 10.0 | 14.713 | O | 69 |
| A7684 | 0.0 | 70.0 | 20.0 | 10.0 | 14.358 | O | 69 |
| A7685 | 17.0 | 48.0 | 25.0 | 10.0 | 19.297 | X | 69 |
| A7686 | 16.1 | 48.9 | 25.0 | 10.0 | 19.026 | X | 69 |
| A7687 | 16.0 | 49.0 | 25.0 | 10.0 | 18.996 | O | 69 |
| A7688 | 15.0 | 50.0 | 25.0 | 10.0 | 18.695 | O | 69 |
| A7689 | 10.0 | 55.0 | 25.0 | 10.0 | 17.191 | O | 69 |
| A7690 | 9.0 | 56.0 | 25.0 | 10.0 | 16.890 | O | 69 |
| A7691 | 8.0 | 57.0 | 25.0 | 10.0 | 16.589 | O | 69 |

[Table 369]

| | | | | | | | |
|---|---|---|---|---|---|---|---|
| A7692 | 7.0 | 58.0 | 25.0 | 10.0 | 16.288 | O | 69 |
| A7693 | 6.0 | 59.0 | 25.0 | 10.0 | 15.988 | O | 69 |
| A7694 | 5.0 | 60.0 | 25.0 | 10.0 | 15.687 | O | 69 |
| A7695 | 4.0 | 61.0 | 25.0 | 10.0 | 15.386 | O | 69 |
| A7696 | 3.0 | 62.0 | 25.0 | 10.0 | 15.085 | O | 69 |
| A7697 | 2.0 | 63.0 | 25.0 | 10.0 | 14.762 | O | 69 |
| A7698 | 1.0 | 64.0 | 25.0 | 10.0 | 14.407 | O | 69 |
| A7699 | 0.0 | 65.0 | 25.0 | 10.0 | 14.052 | O | 69 |
| A7700 | 17.0 | 43.0 | 30.0 | 10.0 | 19.017 | X | 69 |
| A7701 | 16.9 | 43.1 | 30.0 | 10.0 | 18.987 | O | 69 |
| A7702 | 16.0 | 44.0 | 30.0 | 10.0 | 18.716 | O | 69 |
| A7703 | 15.0 | 45.0 | 30.0 | 10.0 | 18.415 | O | 69 |
| A7704 | 10.0 | 50.0 | 30.0 | 10.0 | 16.911 | O | 69 |
| A7705 | 9.0 | 51.0 | 30.0 | 10.0 | 16.610 | O | 69 |
| A7706 | 8.0 | 52.0 | 30.0 | 10.0 | 16.310 | O | 69 |
| A7707 | 7.0 | 53.0 | 30.0 | 10.0 | 16.009 | O | 69 |
| A7708 | 6.0 | 54.0 | 30.0 | 10.0 | 15.708 | O | 69 |
| A7709 | 5.0 | 55.0 | 30.0 | 10.0 | 15.407 | O | 69 |
| A7710 | 4.0 | 56.0 | 30.0 | 10.0 | 15.106 | O | 69 |
| A7711 | 3.0 | 57.0 | 30.0 | 10.0 | 14.805 | O | 69 |
| A7712 | 2.0 | 58.0 | 30.0 | 10.0 | 14.456 | O | 69 |
| A7713 | 1.0 | 59.0 | 30.0 | 10.0 | 14.101 | O | 69 |
| A7714 | 0.0 | 60.0 | 30.0 | 10.0 | 13.747 | O | 69 |
| A7715 | 18.0 | 37.0 | 35.0 | 10.0 | 19.038 | X | 69 |
| A7716 | 17.9 | 37.1 | 35.0 | 10.0 | 19.008 | X | 69 |
| A7717 | 17.8 | 37.2 | 35.0 | 10.0 | 18.978 | O | 69 |
| A7718 | 17.0 | 38.0 | 35.0 | 10.0 | 18.737 | O | 69 |
| A7719 | 15.0 | 40.0 | 35.0 | 10.0 | 18.136 | O | 69 |
| A7720 | 10.0 | 45.0 | 35.0 | 10.0 | 16.632 | O | 69 |
| A7721 | 9.0 | 46.0 | 35.0 | 10.0 | 16.331 | O | 69 |
| A7722 | 8.0 | 47.0 | 35.0 | 10.0 | 16.030 | O | 69 |
| A7723 | 7.0 | 48.0 | 35.0 | 10.0 | 15.729 | O | 69 |
| A7724 | 6.0 | 49.0 | 35.0 | 10.0 | 15.428 | O | 69 |
| A7725 | 5.0 | 50.0 | 35.0 | 10.0 | 15.128 | O | 69 |
| A7726 | 4.0 | 51.0 | 35.0 | 10.0 | 14.827 | O | 69 |
| A7727 | 3.0 | 52.0 | 35.0 | 10.0 | 14.505 | O | 69 |
| A7728 | 2.0 | 53.0 | 35.0 | 10.0 | 14.151 | O | 69 |
| A7729 | 1.0 | 54.0 | 35.0 | 10.0 | 13.796 | O | 69 |
| A7730 | 0.0 | 55.0 | 35.0 | 10.0 | 13.441 | O | 69 |
| A7731 | 19.0 | 31.0 | 40.0 | 10.0 | 19.060 | X | 69 |
| A7732 | 18.9 | 31.1 | 40.0 | 10.0 | 19.029 | X | 69 |
| A7733 | 18.8 | 31.2 | 40.0 | 10.0 | 18.999 | O | 69 |
| A7734 | 18.0 | 32.0 | 40.0 | 10.0 | 18.759 | O | 69 |
| A7735 | 15.0 | 35.0 | 40.0 | 10.0 | 17.856 | O | 69 |
| A7736 | 10.0 | 40.0 | 40.0 | 10.0 | 16.352 | O | 69 |
| A7737 | 9.0 | 41.0 | 40.0 | 10.0 | 16.051 | O | 69 |
| A7738 | 8.0 | 42.0 | 40.0 | 10.0 | 15.750 | O | 69 |
| A7739 | 7.0 | 43.0 | 40.0 | 10.0 | 15.450 | O | 69 |
| A7740 | 6.0 | 44.0 | 40.0 | 10.0 | 15.149 | O | 69 |
| A7741 | 5.0 | 45.0 | 40.0 | 10.0 | 14.848 | O | 69 |

[Table 370]

| A7742 | 4.0 | 46.0 | 40.0 | 10.0 | 14.547 | O | 69 |
|---|---|---|---|---|---|---|---|
| A7743 | 3.0 | 47.0 | 40.0 | 10.0 | 14.200 | O | 69 |
| A7744 | 2.0 | 48.0 | 40.0 | 10.0 | 13.845 | O | 69 |
| A7745 | 1.0 | 49.0 | 40.0 | 10.0 | 13.490 | O | 69 |
| A7746 | 0.0 | 50.0 | 40.0 | 10.0 | 13.135 | O | 69 |
| A7747 | 20.0 | 25.0 | 45.0 | 10.0 | 19.081 | X | 69 |
| A7748 | 19.8 | 25.2 | 45.0 | 10.0 | 19.021 | X | 69 |
| A7749 | 19.7 | 25.3 | 45.0 | 10.0 | 18.990 | O | 69 |
| A7750 | 19.0 | 26.0 | 45.0 | 10.0 | 18.780 | O | 69 |
| A7751 | 15.0 | 30.0 | 45.0 | 10.0 | 17.577 | O | 69 |
| A7752 | 10.0 | 35.0 | 45.0 | 10.0 | 16.072 | O | 69 |
| A7753 | 9.0 | 36.0 | 45.0 | 10.0 | 15.772 | O | 69 |
| A7754 | 8.0 | 37.0 | 45.0 | 10.0 | 15.471 | O | 69 |
| A7755 | 7.0 | 38.0 | 45.0 | 10.0 | 15.170 | O | 69 |
| A7756 | 6.0 | 39.0 | 45.0 | 10.0 | 14.869 | O | 69 |
| A7757 | 5.0 | 40.0 | 45.0 | 10.0 | 14.568 | O | 69 |
| A7758 | 4.0 | 41.0 | 45.0 | 10.0 | 14.249 | O | 69 |
| A7759 | 3.0 | 42.0 | 45.0 | 10.0 | 13.894 | O | 69 |
| A7760 | 2.0 | 43.0 | 45.0 | 10.0 | 13.539 | O | 69 |
| A7761 | 1.0 | 44.0 | 45.0 | 10.0 | 13.184 | O | 69 |
| A7762 | 0.0 | 45.0 | 45.0 | 10.0 | 12.830 | O | 69 |
| A7763 | 21.0 | 19.0 | 50.0 | 10.0 | 19.102 | X | 69 |
| A7764 | 20.7 | 19.3 | 50.0 | 10.0 | 19.012 | X | 69 |
| A7765 | 20.6 | 19.4 | 50.0 | 10.0 | 18.982 | O | 69 |
| A7766 | 20.0 | 20.0 | 50.0 | 10.0 | 18.801 | O | 69 |
| A7767 | 15.0 | 25.0 | 50.0 | 10.0 | 17.297 | O | 69 |
| A7768 | 10.0 | 30.0 | 50.0 | 10.0 | 15.793 | O | 69 |
| A7769 | 9.0 | 31.0 | 50.0 | 10.0 | 15.492 | O | 69 |
| A7770 | 8.0 | 32.0 | 50.0 | 10.0 | 15.191 | O | 69 |
| A7771 | 7.0 | 33.0 | 50.0 | 10.0 | 14.890 | O | 69 |
| A7772 | 6.0 | 34.0 | 50.0 | 10.0 | 14.589 | O | 69 |
| A7773 | 5.0 | 35.0 | 50.0 | 10.0 | 14.289 | O | 69 |
| A7774 | 4.0 | 36.0 | 50.0 | 10.0 | 13.943 | O | 69 |
| A7775 | 3.0 | 37.0 | 50.0 | 10.0 | 13.588 | O | 69 |
| A7776 | 2.0 | 38.0 | 50.0 | 10.0 | 13.234 | O | 69 |
| A7777 | 1.0 | 39.0 | 50.0 | 10.0 | 12.879 | O | 69 |
| A7778 | 0.0 | 40.0 | 50.0 | 10.0 | 12.524 | O | 69 |
| A7779 | 22.0 | 13.0 | 55.0 | 10.0 | 19.123 | X | 69 |
| A7780 | 21.6 | 13.4 | 55.0 | 10.0 | 19.003 | X | 69 |
| A7781 | 21.5 | 13.5 | 55.0 | 10.0 | 18.973 | O | 69 |
| A7782 | 21.0 | 14.0 | 55.0 | 10.0 | 18.822 | O | 69 |
| A7783 | 20.0 | 15.0 | 55.0 | 10.0 | 18.521 | O | 69 |
| A7784 | 15.0 | 20.0 | 55.0 | 10.0 | 17.017 | O | 69 |
| A7785 | 10.0 | 25.0 | 55.0 | 10.0 | 15.513 | O | 69 |
| A7786 | 9.0 | 26.0 | 55.0 | 10.0 | 15.212 | O | 69 |
| A7787 | 8.0 | 27.0 | 55.0 | 10.0 | 14.911 | O | 69 |
| A7788 | 7.0 | 28.0 | 55.0 | 10.0 | 14.611 | O | 69 |
| A7789 | 6.0 | 29.0 | 55.0 | 10.0 | 14.310 | O | 69 |
| A7790 | 5.0 | 30.0 | 55.0 | 10.0 | 13.992 | O | 69 |
| A7791 | 4.0 | 31.0 | 55.0 | 10.0 | 13.637 | O | 69 |

[Table 371]

| A7792 | 3.0 | 32.0 | 55.0 | 10.0 | 13.283 | O | 69 |
| A7793 | 2.0 | 33.0 | 55.0 | 10.0 | 12.928 | O | 69 |
| A7794 | 1.0 | 34.0 | 55.0 | 10.0 | 12.573 | O | 69 |
| A7795 | 0.0 | 35.0 | 55.0 | 10.0 | 12.218 | O | 69 |
| A7796 | 23.0 | 7.0 | 60.0 | 10.0 | 19.144 | X | 69 |
| A7797 | 22.6 | 7.4 | 60.0 | 10.0 | 19.024 | X | 69 |
| A7798 | 22.5 | 7.5 | 60.0 | 10.0 | 18.994 | O | 69 |
| A7799 | 22.0 | 8.0 | 60.0 | 10.0 | 18.843 | O | 69 |
| A7800 | 20.0 | 10.0 | 60.0 | 10.0 | 18.242 | O | 69 |
| A7801 | 15.0 | 15.0 | 60.0 | 10.0 | 16.738 | O | 69 |
| A7802 | 10.0 | 20.0 | 60.0 | 10.0 | 15.234 | O | 69 |
| A7803 | 9.0 | 21.0 | 60.0 | 10.0 | 14.933 | O | 69 |
| A7804 | 8.0 | 22.0 | 60.0 | 10.0 | 14.632 | O | 69 |
| A7805 | 7.0 | 23.0 | 60.0 | 10.0 | 14.331 | O | 69 |
| A7806 | 6.0 | 24.0 | 60.0 | 10.0 | 14.030 | O | 69 |
| A7807 | 5.0 | 25.0 | 60.0 | 10.0 | 13.686 | O | 69 |
| A7808 | 4.0 | 26.0 | 60.0 | 10.0 | 13.332 | O | 69 |
| A7809 | 3.0 | 27.0 | 60.0 | 10.0 | 12.977 | O | 69 |
| A7810 | 2.0 | 28.0 | 60.0 | 10.0 | 12.622 | O | 69 |
| A7811 | 1.0 | 29.0 | 60.0 | 10.0 | 12.268 | O | 69 |
| A7812 | 0.0 | 30.0 | 60.0 | 10.0 | 11.913 | O | 69 |
| A7813 | 24.0 | 1.0 | 65.0 | 10.0 | 19.166 | X | 69 |
| A7814 | 23.5 | 1.5 | 65.0 | 10.0 | 19.015 | X | 69 |
| A7815 | 23.4 | 1.6 | 65.0 | 10.0 | 18.985 | O | 69 |
| A7816 | 23.0 | 2.0 | 65.0 | 10.0 | 18.865 | O | 69 |
| A7817 | 20.0 | 5.0 | 65.0 | 10.0 | 17.962 | O | 69 |
| A7818 | 15.0 | 10.0 | 65.0 | 10.0 | 16.458 | O | 69 |
| A7819 | 10.0 | 15.0 | 65.0 | 10.0 | 14.954 | O | 69 |
| A7820 | 9.0 | 16.0 | 65.0 | 10.0 | 14.653 | O | 69 |
| A7821 | 8.0 | 17.0 | 65.0 | 10.0 | 14.352 | O | 69 |
| A7822 | 7.0 | 18.0 | 65.0 | 10.0 | 14.051 | O | 69 |
| A7823 | 6.0 | 19.0 | 65.0 | 10.0 | 13.735 | O | 69 |
| A7824 | 5.0 | 20.0 | 65.0 | 10.0 | 13.381 | O | 69 |
| A7825 | 4.0 | 21.0 | 65.0 | 10.0 | 13.026 | O | 69 |
| A7826 | 3.0 | 22.0 | 65.0 | 10.0 | 12.671 | O | 69 |
| A7827 | 2.0 | 23.0 | 65.0 | 10.0 | 12.317 | O | 69 |
| A7828 | 1.0 | 24.0 | 65.0 | 10.0 | 11.962 | O | 69 |
| A7829 | 0.0 | 25.0 | 65.0 | 10.0 | 11.607 | O | 69 |
| A7830 | 14.0 | 66.0 | 5.0 | 15.0 | 19.178 | X | 102 |
| A7831 | 13.5 | 66.5 | 5.0 | 15.0 | 19.027 | X | 102 |
| A7832 | 13.4 | 66.6 | 5.0 | 15.0 | 18.997 | O | 102 |
| A7833 | 13.0 | 67.0 | 5.0 | 15.0 | 18.877 | O | 102 |
| A7834 | 10.0 | 70.0 | 5.0 | 15.0 | 17.974 | O | 102 |
| A7835 | 9.0 | 71.0 | 5.0 | 15.0 | 17.673 | O | 102 |
| A7836 | 8.0 | 72.0 | 5.0 | 15.0 | 17.373 | O | 102 |
| A7837 | 7.0 | 73.0 | 5.0 | 15.0 | 17.072 | O | 102 |
| A7838 | 6.0 | 74.0 | 5.0 | 15.0 | 16.771 | O | 102 |
| A7839 | 5.0 | 75.0 | 5.0 | 15.0 | 16.470 | O | 102 |
| A7840 | 4.0 | 76.0 | 5.0 | 15.0 | 16.169 | O | 102 |
| A7841 | 3.0 | 77.0 | 5.0 | 15.0 | 15.868 | O | 102 |

[Table 372]

| A7842 | 2.0 | 78.0 | 5.0 | 15.0 | 15.568 | O | 102 |
|---|---|---|---|---|---|---|---|
| A7843 | 1.0 | 79.0 | 5.0 | 15.0 | 15.267 | O | 102 |
| A7844 | 0.0 | 80.0 | 5.0 | 15.0 | 14.940 | O | 102 |
| A7845 | 15.0 | 60.0 | 10.0 | 15.0 | 19.199 | X | 102 |
| A7846 | 14.4 | 60.6 | 10.0 | 15.0 | 19.018 | X | 102 |
| A7847 | 14.3 | 60.7 | 10.0 | 15.0 | 18.988 | O | 102 |
| A7848 | 14.0 | 61.0 | 10.0 | 15.0 | 18.898 | O | 102 |
| A7849 | 10.0 | 65.0 | 10.0 | 15.0 | 17.695 | O | 102 |
| A7850 | 9.0 | 66.0 | 10.0 | 15.0 | 17.394 | O | 102 |
| A7851 | 8.0 | 67.0 | 10.0 | 15.0 | 17.093 | O | 102 |
| A7852 | 7.0 | 68.0 | 10.0 | 15.0 | 16.792 | O | 102 |
| A7853 | 6.0 | 69.0 | 10.0 | 15.0 | 16.491 | O | 102 |
| A7854 | 5.0 | 70.0 | 10.0 | 15.0 | 16.190 | O | 102 |
| A7855 | 4.0 | 71.0 | 10.0 | 15.0 | 15.890 | O | 102 |
| A7856 | 3.0 | 72.0 | 10.0 | 15.0 | 15.589 | O | 102 |
| A7857 | 2.0 | 73.0 | 10.0 | 15.0 | 15.288 | O | 102 |
| A7858 | 1.0 | 74.0 | 10.0 | 15.0 | 14.987 | O | 102 |
| A7859 | 0.0 | 75.0 | 10.0 | 15.0 | 14.634 | O | 102 |
| A7860 | 16.0 | 54.0 | 15.0 | 15.0 | 19.220 | X | 102 |
| A7861 | 15.3 | 54.7 | 15.0 | 15.0 | 19.009 | X | 102 |
| A7862 | 15.2 | 54.8 | 15.0 | 15.0 | 18.979 | O | 102 |
| A7863 | 15.0 | 55.0 | 15.0 | 15.0 | 18.919 | O | 102 |
| A7864 | 10.0 | 60.0 | 15.0 | 15.0 | 17.415 | O | 102 |
| A7865 | 9.0 | 61.0 | 15.0 | 15.0 | 17.114 | O | 102 |
| A7866 | 8.0 | 62.0 | 15.0 | 15.0 | 16.813 | O | 102 |
| A7867 | 7.0 | 63.0 | 15.0 | 15.0 | 16.513 | O | 102 |
| A7868 | 6.0 | 64.0 | 15.0 | 15.0 | 16.212 | O | 102 |
| A7869 | 5.0 | 65.0 | 15.0 | 15.0 | 15.911 | O | 102 |
| A7870 | 4.0 | 66.0 | 15.0 | 15.0 | 15.610 | O | 102 |
| A7871 | 3.0 | 67.0 | 15.0 | 15.0 | 15.309 | O | 102 |
| A7872 | 2.0 | 68.0 | 15.0 | 15.0 | 15.008 | O | 102 |
| A7873 | 1.0 | 69.0 | 15.0 | 15.0 | 14.683 | O | 102 |
| A7874 | 0.0 | 70.0 | 15.0 | 15.0 | 14.329 | O | 102 |
| A7875 | 17.0 | 48.0 | 20.0 | 15.0 | 19.241 | X | 102 |
| A7876 | 16.2 | 48.8 | 20.0 | 15.0 | 19.001 | X | 102 |
| A7877 | 16.1 | 48.9 | 20.0 | 15.0 | 18.970 | O | 102 |
| A7878 | 16.0 | 49.0 | 20.0 | 15.0 | 18.940 | O | 102 |
| A7879 | 15.0 | 50.0 | 20.0 | 15.0 | 18.640 | O | 102 |
| A7880 | 10.0 | 55.0 | 20.0 | 15.0 | 17.135 | O | 102 |
| A7881 | 9.0 | 56.0 | 20.0 | 15.0 | 16.835 | O | 102 |
| A7882 | 8.0 | 57.0 | 20.0 | 15.0 | 16.534 | O | 102 |
| A7883 | 7.0 | 58.0 | 20.0 | 15.0 | 16.233 | O | 102 |
| A7884 | 6.0 | 59.0 | 20.0 | 15.0 | 15.932 | O | 102 |
| A7885 | 5.0 | 60.0 | 20.0 | 15.0 | 15.631 | O | 102 |
| A7886 | 4.0 | 61.0 | 20.0 | 15.0 | 15.330 | O | 102 |
| A7887 | 3.0 | 62.0 | 20.0 | 15.0 | 15.030 | O | 102 |
| A7888 | 2.0 | 63.0 | 20.0 | 15.0 | 14.729 | O | 102 |
| A7889 | 1.0 | 64.0 | 20.0 | 15.0 | 14.378 | O | 102 |
| A7890 | 0.0 | 65.0 | 20.0 | 15.0 | 14.023 | O | 102 |
| A7891 | 18.0 | 42.0 | 25.0 | 15.0 | 19.262 | X | 102 |

[Table 373]

392

| A7892 | 17.2 | 42.8 | 25.0 | 15.0 | 19.022 | X | 102 |
|---|---|---|---|---|---|---|---|
| A7893 | 17.1 | 42.9 | 25.0 | 15.0 | 18.992 | O | 102 |
| A7894 | 17.0 | 43.0 | 25.0 | 15.0 | 18.962 | O | 102 |
| A7895 | 15.0 | 45.0 | 25.0 | 15.0 | 18.360 | O | 102 |
| A7896 | 10.0 | 50.0 | 25.0 | 15.0 | 16.856 | O | 102 |
| A7897 | 9.0 | 51.0 | 25.0 | 15.0 | 16.555 | O | 102 |
| A7898 | 8.0 | 52.0 | 25.0 | 15.0 | 16.254 | O | 102 |
| A7899 | 7.0 | 53.0 | 25.0 | 15.0 | 15.953 | O | 102 |
| A7900 | 6.0 | 54.0 | 25.0 | 15.0 | 15.652 | O | 102 |
| A7901 | 5.0 | 55.0 | 25.0 | 15.0 | 15.352 | O | 102 |
| A7902 | 4.0 | 56.0 | 25.0 | 15.0 | 15.051 | O | 102 |
| A7903 | 3.0 | 57.0 | 25.0 | 15.0 | 14.750 | O | 102 |
| A7904 | 2.0 | 58.0 | 25.0 | 15.0 | 14.427 | O | 102 |
| A7905 | 1.0 | 59.0 | 25.0 | 15.0 | 14.072 | O | 102 |
| A7906 | 0.0 | 60.0 | 25.0 | 15.0 | 13.717 | O | 102 |
| A7907 | 19.0 | 36.0 | 30.0 | 15.0 | 19.284 | X | 102 |
| A7908 | 18.1 | 36.9 | 30.0 | 15.0 | 19.013 | X | 102 |
| A7909 | 18.0 | 37.0 | 30.0 | 15.0 | 18.983 | O | 102 |
| A7910 | 15.0 | 40.0 | 30.0 | 15.0 | 18.080 | O | 102 |
| A7911 | 10.0 | 45.0 | 30.0 | 15.0 | 16.576 | O | 102 |
| A7912 | 9.0 | 46.0 | 30.0 | 15.0 | 16.275 | O | 102 |
| A7913 | 8.0 | 47.0 | 30.0 | 15.0 | 15.974 | O | 102 |
| A7914 | 7.0 | 48.0 | 30.0 | 15.0 | 15.674 | O | 102 |
| A7915 | 6.0 | 49.0 | 30.0 | 15.0 | 15.373 | O | 102 |
| A7916 | 5.0 | 50.0 | 30.0 | 15.0 | 15.072 | O | 102 |
| A7917 | 4.0 | 51.0 | 30.0 | 15.0 | 14.771 | O | 102 |
| A7918 | 3.0 | 52.0 | 30.0 | 15.0 | 14.470 | O | 102 |
| A7919 | 2.0 | 53.0 | 30.0 | 15.0 | 14.121 | O | 102 |
| A7920 | 1.0 | 54.0 | 30.0 | 15.0 | 13.766 | O | 102 |
| A7921 | 0.0 | 55.0 | 30.0 | 15.0 | 13.412 | O | 102 |
| A7922 | 19.0 | 31.0 | 35.0 | 15.0 | 19.004 | X | 102 |
| A7923 | 18.9 | 31.1 | 35.0 | 15.0 | 18.974 | O | 102 |
| A7924 | 18.0 | 32.0 | 35.0 | 15.0 | 18.703 | O | 102 |
| A7925 | 15.0 | 35.0 | 35.0 | 15.0 | 17.801 | O | 102 |
| A7926 | 10.0 | 40.0 | 35.0 | 15.0 | 16.296 | O | 102 |
| A7927 | 9.0 | 41.0 | 35.0 | 15.0 | 15.996 | O | 102 |
| A7928 | 8.0 | 42.0 | 35.0 | 15.0 | 15.695 | O | 102 |
| A7929 | 7.0 | 43.0 | 35.0 | 15.0 | 15.394 | O | 102 |
| A7930 | 6.0 | 44.0 | 35.0 | 15.0 | 15.093 | O | 102 |
| A7931 | 5.0 | 45.0 | 35.0 | 15.0 | 14.792 | O | 102 |
| A7932 | 4.0 | 46.0 | 35.0 | 15.0 | 14.492 | O | 102 |
| A7933 | 3.0 | 47.0 | 35.0 | 15.0 | 14.170 | O | 102 |
| A7934 | 2.0 | 48.0 | 35.0 | 15.0 | 13.815 | O | 102 |
| A7935 | 1.0 | 49.0 | 35.0 | 15.0 | 13.461 | O | 102 |
| A7936 | 0.0 | 50.0 | 35.0 | 15.0 | 13.106 | O | 102 |
| A7937 | 20.0 | 25.0 | 40.0 | 15.0 | 19.025 | X | 102 |
| A7938 | 19.9 | 25.1 | 40.0 | 15.0 | 18.995 | O | 102 |
| A7939 | 19.0 | 26.0 | 40.0 | 15.0 | 18.724 | O | 102 |
| A7940 | 15.0 | 30.0 | 40.0 | 15.0 | 17.521 | O | 102 |
| A7941 | 10.0 | 35.0 | 40.0 | 15.0 | 16.017 | O | 102 |

[Table 374]

| A7942 | 9.0 | 36.0 | 40.0 | 15.0 | 15.716 | O | 102 |
|---|---|---|---|---|---|---|---|
| A7943 | 8.0 | 37.0 | 40.0 | 15.0 | 15.415 | O | 102 |
| A7944 | 7.0 | 38.0 | 40.0 | 15.0 | 15.114 | O | 102 |
| A7945 | 6.0 | 39.0 | 40.0 | 15.0 | 14.814 | O | 102 |
| A7946 | 5.0 | 40.0 | 40.0 | 15.0 | 14.513 | O | 102 |
| A7947 | 4.0 | 41.0 | 40.0 | 15.0 | 14.212 | O | 102 |
| A7948 | 3.0 | 42.0 | 40.0 | 15.0 | 13.864 | O | 102 |
| A7949 | 2.0 | 43.0 | 40.0 | 15.0 | 13.510 | O | 102 |
| A7950 | 1.0 | 44.0 | 40.0 | 15.0 | 13.155 | O | 102 |
| A7951 | 0.0 | 45.0 | 40.0 | 15.0 | 12.800 | O | 102 |
| A7952 | 21.0 | 19.0 | 45.0 | 15.0 | 19.046 | X | 102 |
| A7953 | 20.9 | 19.1 | 45.0 | 15.0 | 19.016 | X | 102 |
| A7954 | 20.8 | 19.2 | 45.0 | 15.0 | 18.986 | O | 102 |
| A7955 | 20.0 | 20.0 | 45.0 | 15.0 | 18.746 | O | 102 |
| A7956 | 15.0 | 25.0 | 45.0 | 15.0 | 17.241 | O | 102 |
| A7957 | 10.0 | 30.0 | 45.0 | 15.0 | 15.737 | O | 102 |
| A7958 | 9.0 | 31.0 | 45.0 | 15.0 | 15.436 | O | 102 |
| A7959 | 8.0 | 32.0 | 45.0 | 15.0 | 15.136 | O | 102 |
| A7960 | 7.0 | 33.0 | 45.0 | 15.0 | 14.835 | O | 102 |
| A7961 | 6.0 | 34.0 | 45.0 | 15.0 | 14.534 | O | 102 |
| A7962 | 5.0 | 35.0 | 45.0 | 15.0 | 14.233 | O | 102 |
| A7963 | 4.0 | 36.0 | 45.0 | 15.0 | 13.913 | O | 102 |
| A7964 | 3.0 | 37.0 | 45.0 | 15.0 | 13.559 | O | 102 |
| A7965 | 2.0 | 38.0 | 45.0 | 15.0 | 13.204 | O | 102 |
| A7966 | 1.0 | 39.0 | 45.0 | 15.0 | 12.849 | O | 102 |
| A7967 | 0.0 | 40.0 | 45.0 | 15.0 | 12.495 | O | 102 |
| A7968 | 22.0 | 13.0 | 50.0 | 15.0 | 19.068 | X | 102 |
| A7969 | 21.8 | 13.2 | 50.0 | 15.0 | 19.007 | X | 102 |
| A7970 | 21.7 | 13.3 | 50.0 | 15.0 | 18.977 | O | 102 |
| A7971 | 21.0 | 14.0 | 50.0 | 15.0 | 18.767 | O | 102 |
| A7972 | 20.0 | 15.0 | 50.0 | 15.0 | 18.466 | O | 102 |
| A7973 | 15.0 | 20.0 | 50.0 | 15.0 | 16.962 | O | 102 |
| A7974 | 10.0 | 25.0 | 50.0 | 15.0 | 15.458 | O | 102 |
| A7975 | 9.0 | 26.0 | 50.0 | 15.0 | 15.157 | O | 102 |
| A7976 | 8.0 | 27.0 | 50.0 | 15.0 | 14.856 | O | 102 |
| A7977 | 7.0 | 28.0 | 50.0 | 15.0 | 14.555 | O | 102 |
| A7978 | 6.0 | 29.0 | 50.0 | 15.0 | 14.254 | O | 102 |
| A7979 | 5.0 | 30.0 | 50.0 | 15.0 | 13.953 | O | 102 |
| A7980 | 4.0 | 31.0 | 50.0 | 15.0 | 13.608 | O | 102 |
| A7981 | 3.0 | 32.0 | 50.0 | 15.0 | 13.253 | O | 102 |
| A7982 | 2.0 | 33.0 | 50.0 | 15.0 | 12.898 | O | 102 |
| A7983 | 1.0 | 34.0 | 50.0 | 15.0 | 12.544 | O | 102 |
| A7984 | 0.0 | 35.0 | 50.0 | 15.0 | 12.189 | O | 102 |
| A7985 | 23.0 | 7.0 | 55.0 | 15.0 | 19.089 | X | 102 |
| A7986 | 22.8 | 7.2 | 55.0 | 15.0 | 19.029 | X | 102 |
| A7987 | 22.7 | 7.3 | 55.0 | 15.0 | 18.999 | O | 102 |
| A7988 | 22.0 | 8.0 | 55.0 | 15.0 | 18.788 | O | 102 |
| A7989 | 20.0 | 10.0 | 55.0 | 15.0 | 18.186 | O | 102 |
| A7990 | 15.0 | 15.0 | 55.0 | 15.0 | 16.682 | O | 102 |
| A7991 | 10.0 | 20.0 | 55.0 | 15.0 | 15.178 | O | 102 |

[Table 375]

| A7992 | 9.0 | 21.0 | 55.0 | 15.0 | 14.877 | O | 102 |
|---|---|---|---|---|---|---|---|
| A7993 | 8.0 | 22.0 | 55.0 | 15.0 | 14.576 | O | 102 |
| A7994 | 7.0 | 23.0 | 55.0 | 15.0 | 14.275 | O | 102 |
| A7995 | 6.0 | 24.0 | 55.0 | 15.0 | 13.975 | O | 102 |
| A7996 | 5.0 | 25.0 | 55.0 | 15.0 | 13.657 | O | 102 |
| A7997 | 4.0 | 26.0 | 55.0 | 15.0 | 13.302 | O | 102 |
| A7998 | 3.0 | 27.0 | 55.0 | 15.0 | 12.947 | O | 102 |
| A7999 | 2.0 | 28.0 | 55.0 | 15.0 | 12.593 | O | 102 |
| A8000 | 1.0 | 29.0 | 55.0 | 15.0 | 12.238 | O | 102 |
| A8001 | 0.0 | 30.0 | 55.0 | 15.0 | 11.883 | O | 102 |
| A8002 | 24.0 | 1.0 | 60.0 | 15.0 | 19.110 | X | 102 |
| A8003 | 23.7 | 1.3 | 60.0 | 15.0 | 19.020 | X | 102 |
| A8004 | 23.6 | 1.4 | 60.0 | 15.0 | 18.990 | O | 102 |
| A8005 | 23.0 | 2.0 | 60.0 | 15.0 | 18.809 | O | 102 |
| A8006 | 20.0 | 5.0 | 60.0 | 15.0 | 17.907 | O | 102 |
| A8007 | 15.0 | 10.0 | 60.0 | 15.0 | 16.403 | O | 102 |
| A8008 | 10.0 | 15.0 | 60.0 | 15.0 | 14.898 | O | 102 |
| A8009 | 9.0 | 16.0 | 60.0 | 15.0 | 14.598 | O | 102 |
| A8010 | 8.0 | 17.0 | 60.0 | 15.0 | 14.297 | O | 102 |
| A8011 | 7.0 | 18.0 | 60.0 | 15.0 | 13.996 | O | 102 |
| A8012 | 6.0 | 19.0 | 60.0 | 15.0 | 13.695 | O | 102 |
| A8013 | 5.0 | 20.0 | 60.0 | 15.0 | 13.351 | O | 102 |
| A8014 | 4.0 | 21.0 | 60.0 | 15.0 | 12.996 | O | 102 |
| A8015 | 3.0 | 22.0 | 60.0 | 15.0 | 12.642 | O | 102 |
| A8016 | 2.0 | 23.0 | 60.0 | 15.0 | 12.287 | O | 102 |
| A8017 | 1.0 | 24.0 | 60.0 | 15.0 | 11.932 | O | 102 |
| A8018 | 0.0 | 25.0 | 60.0 | 15.0 | 11.578 | O | 102 |
| A8019 | 15.0 | 60.0 | 5.0 | 20.0 | 19.143 | X | 136 |
| A8020 | 14.6 | 60.4 | 5.0 | 20.0 | 19.023 | X | 136 |
| A8021 | 14.5 | 60.5 | 5.0 | 20.0 | 18.993 | O | 136 |
| A8022 | 14.0 | 61.0 | 5.0 | 20.0 | 18.842 | O | 136 |
| A8023 | 10.0 | 65.0 | 5.0 | 20.0 | 17.639 | O | 136 |
| A8024 | 9.0 | 66.0 | 5.0 | 20.0 | 17.338 | O | 136 |
| A8025 | 8.0 | 67.0 | 5.0 | 20.0 | 17.037 | O | 136 |
| A8026 | 7.0 | 68.0 | 5.0 | 20.0 | 16.737 | O | 136 |
| A8027 | 6.0 | 69.0 | 5.0 | 20.0 | 16.436 | O | 136 |
| A8028 | 5.0 | 70.0 | 5.0 | 20.0 | 16.135 | O | 136 |
| A8029 | 4.0 | 71.0 | 5.0 | 20.0 | 15.834 | O | 136 |
| A8030 | 3.0 | 72.0 | 5.0 | 20.0 | 15.533 | O | 136 |
| A8031 | 2.0 | 73.0 | 5.0 | 20.0 | 15.232 | O | 136 |
| A8032 | 1.0 | 74.0 | 5.0 | 20.0 | 14.932 | O | 136 |
| A8033 | 0.0 | 75.0 | 5.0 | 20.0 | 14.605 | O | 136 |
| A8034 | 16.0 | 54.0 | 10.0 | 20.0 | 19.164 | X | 136 |
| A8035 | 15.5 | 54.5 | 10.0 | 20.0 | 19.014 | X | 136 |
| A8036 | 15.4 | 54.6 | 10.0 | 20.0 | 18.984 | O | 136 |
| A8037 | 15.0 | 55.0 | 10.0 | 20.0 | 18.864 | O | 136 |
| A8038 | 10.0 | 60.0 | 10.0 | 20.0 | 17.359 | O | 136 |
| A8039 | 9.0 | 61.0 | 10.0 | 20.0 | 17.059 | O | 136 |
| A8040 | 8.0 | 62.0 | 10.0 | 20.0 | 16.758 | O | 136 |
| A8041 | 7.0 | 63.0 | 10.0 | 20.0 | 16.457 | O | 136 |

[Table 376]

| A8042 | 6.0 | 64.0 | 10.0 | 20.0 | 16.156 | O | 136 |
|---|---|---|---|---|---|---|---|
| A8043 | 5.0 | 65.0 | 10.0 | 20.0 | 15.855 | O | 136 |
| A8044 | 4.0 | 66.0 | 10.0 | 20.0 | 15.554 | O | 136 |
| A8045 | 3.0 | 67.0 | 10.0 | 20.0 | 15.254 | O | 136 |
| A8046 | 2.0 | 68.0 | 10.0 | 20.0 | 14.953 | O | 136 |
| A8047 | 1.0 | 69.0 | 10.0 | 20.0 | 14.652 | O | 136 |
| A8048 | 0.0 | 70.0 | 10.0 | 20.0 | 14.299 | O | 136 |
| A8049 | 17.0 | 48.0 | 15.0 | 20.0 | 19.186 | X | 136 |
| A8050 | 16.4 | 48.6 | 15.0 | 20.0 | 19.005 | X | 136 |
| A8051 | 16.3 | 48.7 | 15.0 | 20.0 | 18.975 | O | 136 |
| A8052 | 16.0 | 49.0 | 15.0 | 20.0 | 18.885 | O | 136 |
| A8053 | 15.0 | 50.0 | 15.0 | 20.0 | 18.584 | O | 136 |
| A8054 | 10.0 | 55.0 | 15.0 | 20.0 | 17.080 | O | 136 |
| A8055 | 9.0 | 56.0 | 15.0 | 20.0 | 16.779 | O | 136 |
| A8056 | 8.0 | 57.0 | 15.0 | 20.0 | 16.478 | O | 136 |
| A8057 | 7.0 | 58.0 | 15.0 | 20.0 | 16.177 | O | 136 |
| A8058 | 6.0 | 59.0 | 15.0 | 20.0 | 15.877 | O | 136 |
| A8059 | 5.0 | 60.0 | 15.0 | 20.0 | 15.576 | O | 136 |
| A8060 | 4.0 | 61.0 | 15.0 | 20.0 | 15.275 | O | 136 |
| A8061 | 3.0 | 62.0 | 15.0 | 20.0 | 14.974 | O | 136 |
| A8062 | 2.0 | 63.0 | 15.0 | 20.0 | 14.673 | O | 136 |
| A8063 | 1.0 | 64.0 | 15.0 | 20.0 | 14.348 | O | 136 |
| A8064 | 0.0 | 65.0 | 15.0 | 20.0 | 13.993 | O | 136 |
| A8065 | 18.0 | 42.0 | 20.0 | 20.0 | 19.207 | X | 136 |
| A8066 | 17.4 | 42.6 | 20.0 | 20.0 | 19.026 | X | 136 |
| A8067 | 17.3 | 42.7 | 20.0 | 20.0 | 18.996 | O | 136 |
| A8068 | 17.0 | 43.0 | 20.0 | 20.0 | 18.906 | O | 136 |
| A8069 | 15.0 | 45.0 | 20.0 | 20.0 | 18.304 | O | 136 |
| A8070 | 10.0 | 50.0 | 20.0 | 20.0 | 16.800 | O | 136 |
| A8071 | 9.0 | 51.0 | 20.0 | 20.0 | 16.499 | O | 136 |
| A8072 | 8.0 | 52.0 | 20.0 | 20.0 | 16.199 | O | 136 |
| A8073 | 7.0 | 53.0 | 20.0 | 20.0 | 15.898 | O | 136 |
| A8074 | 6.0 | 54.0 | 20.0 | 20.0 | 15.597 | O | 136 |
| A8075 | 5.0 | 55.0 | 20.0 | 20.0 | 15.296 | O | 136 |
| A8076 | 4.0 | 56.0 | 20.0 | 20.0 | 14.995 | O | 136 |
| A8077 | 3.0 | 57.0 | 20.0 | 20.0 | 14.694 | O | 136 |
| A8078 | 2.0 | 58.0 | 20.0 | 20.0 | 14.394 | O | 136 |
| A8079 | 1.0 | 59.0 | 20.0 | 20.0 | 14.042 | O | 136 |
| A8080 | 0.0 | 60.0 | 20.0 | 20.0 | 13.688 | O | 136 |
| A8081 | 19.0 | 36.0 | 25.0 | 20.0 | 19.228 | X | 136 |
| A8082 | 18.3 | 36.7 | 25.0 | 20.0 | 19.017 | X | 136 |
| A8083 | 18.2 | 36.8 | 25.0 | 20.0 | 18.987 | O | 136 |
| A8084 | 18.0 | 37.0 | 25.0 | 20.0 | 18.927 | O | 136 |
| A8085 | 15.0 | 40.0 | 25.0 | 20.0 | 18.025 | O | 136 |
| A8086 | 10.0 | 45.0 | 25.0 | 20.0 | 16.521 | O | 136 |
| A8087 | 9.0 | 46.0 | 25.0 | 20.0 | 16.220 | O | 136 |
| A8088 | 8.0 | 47.0 | 25.0 | 20.0 | 15.919 | O | 136 |
| A8089 | 7.0 | 48.0 | 25.0 | 20.0 | 15.618 | O | 136 |
| A8090 | 6.0 | 49.0 | 25.0 | 20.0 | 15.317 | O | 136 |
| A8091 | 5.0 | 50.0 | 25.0 | 20.0 | 15.016 | O | 136 |

[Table 377]

| A8092 | 4.0 | 51.0 | 25.0 | 20.0 | 14.716 | O | 136 |
|---|---|---|---|---|---|---|---|
| A8093 | 3.0 | 52.0 | 25.0 | 20.0 | 14.415 | O | 136 |
| A8094 | 2.0 | 53.0 | 25.0 | 20.0 | 14.091 | O | 136 |
| A8095 | 1.0 | 54.0 | 25.0 | 20.0 | 13.737 | O | 136 |
| A8096 | 0.0 | 55.0 | 25.0 | 20.0 | 13.382 | O | 136 |
| A8097 | 20.0 | 30.0 | 30.0 | 20.0 | 19.249 | X | 136 |
| A8098 | 19.2 | 30.8 | 30.0 | 20.0 | 19.009 | X | 136 |
| A8099 | 19.1 | 30.9 | 30.0 | 20.0 | 18.979 | O | 136 |
| A8100 | 19.0 | 31.0 | 30.0 | 20.0 | 18.948 | O | 136 |
| A8101 | 15.0 | 35.0 | 30.0 | 20.0 | 17.745 | O | 136 |
| A8102 | 10.0 | 40.0 | 30.0 | 20.0 | 16.241 | O | 136 |
| A8103 | 9.0 | 41.0 | 30.0 | 20.0 | 15.940 | O | 136 |
| A8104 | 8.0 | 42.0 | 30.0 | 20.0 | 15.639 | O | 136 |
| A8105 | 7.0 | 43.0 | 30.0 | 20.0 | 15.338 | O | 136 |
| A8106 | 6.0 | 44.0 | 30.0 | 20.0 | 15.038 | O | 136 |
| A8107 | 5.0 | 45.0 | 30.0 | 20.0 | 14.737 | O | 136 |
| A8108 | 4.0 | 46.0 | 30.0 | 20.0 | 14.436 | O | 136 |
| A8109 | 3.0 | 47.0 | 30.0 | 20.0 | 14.135 | O | 136 |
| A8110 | 2.0 | 48.0 | 30.0 | 20.0 | 13.786 | O | 136 |
| A8111 | 1.0 | 49.0 | 30.0 | 20.0 | 13.431 | O | 136 |
| A8112 | 0.0 | 50.0 | 30.0 | 20.0 | 13.076 | O | 136 |
| A8113 | 21.0 | 24.0 | 35.0 | 20.0 | 19.270 | X | 136 |
| A8114 | 20.1 | 24.9 | 35.0 | 20.0 | 19.000 | **X** | 136 |
| A8115 | 20.0 | 25.0 | 35.0 | 20.0 | 18.970 | O | 136 |
| A8116 | 15.0 | 30.0 | 35.0 | 20.0 | 17.465 | O | 136 |
| A8117 | 10.0 | 35.0 | 35.0 | 20.0 | 15.961 | O | 136 |
| A8118 | 9.0 | 36.0 | 35.0 | 20.0 | 15.660 | O | 136 |
| A8119 | 8.0 | 37.0 | 35.0 | 20.0 | 15.360 | O | 136 |
| A8120 | 7.0 | 38.0 | 35.0 | 20.0 | 15.059 | O | 136 |
| A8121 | 6.0 | 39.0 | 35.0 | 20.0 | 14.758 | O | 136 |
| A8122 | 5.0 | 40.0 | 35.0 | 20.0 | 14.457 | O | 136 |
| A8123 | 4.0 | 41.0 | 35.0 | 20.0 | 14.156 | O | 136 |
| A8124 | 3.0 | 42.0 | 35.0 | 20.0 | 13.835 | O | 136 |
| A8125 | 2.0 | 43.0 | 35.0 | 20.0 | 13.480 | O | 136 |
| A8126 | 1.0 | 44.0 | 35.0 | 20.0 | 13.125 | O | 136 |
| A8127 | 0.0 | 45.0 | 35.0 | 20.0 | 12.771 | O | 136 |
| A8128 | 22.0 | 18.0 | 40.0 | 20.0 | 19.292 | X | 136 |
| A8129 | 21.1 | 18.9 | 40.0 | 20.0 | 19.021 | X | 136 |
| A8130 | 21.0 | 19.0 | 40.0 | 20.0 | 18.991 | O | 136 |
| A8131 | 20.0 | 20.0 | 40.0 | 20.0 | 18.690 | O | 136 |
| A8132 | 15.0 | 25.0 | 40.0 | 20.0 | 17.186 | O | 136 |
| A8133 | 10.0 | 30.0 | 40.0 | 20.0 | 15.682 | O | 136 |
| A8134 | 9.0 | 31.0 | 40.0 | 20.0 | 15.381 | O | 136 |
| A8135 | 8.0 | 32.0 | 40.0 | 20.0 | 15.080 | O | 136 |
| A8136 | 7.0 | 33.0 | 40.0 | 20.0 | 14.779 | O | 136 |
| A8137 | 6.0 | 34.0 | 40.0 | 20.0 | 14.478 | O | 136 |
| A8138 | 5.0 | 35.0 | 40.0 | 20.0 | 14.178 | O | 136 |
| A8139 | 4.0 | 36.0 | 40.0 | 20.0 | 13.877 | O | 136 |
| A8140 | 3.0 | 37.0 | 40.0 | 20.0 | 13.529 | O | 136 |
| A8141 | 2.0 | 38.0 | 40.0 | 20.0 | 13.175 | O | 136 |

[Table 378]

| A8142 | 1.0 | 39.0 | 40.0 | 20.0 | 12.820 | O | 136 |
|---|---|---|---|---|---|---|---|
| A8143 | 0.0 | 40.0 | 40.0 | 20.0 | 12.465 | O | 136 |
| A8144 | 22.0 | 13.0 | 45.0 | 20.0 | 19.012 | X | 136 |
| A8145 | 21.9 | 13.1 | 45.0 | 20.0 | 18.982 | O | 136 |
| A8146 | 21.0 | 14.0 | 45.0 | 20.0 | 18.711 | O | 136 |
| A8147 | 20.0 | 15.0 | 45.0 | 20.0 | 18.410 | O | 136 |
| A8148 | 15.0 | 20.0 | 45.0 | 20.0 | 16.906 | O | 136 |
| A8149 | 10.0 | 25.0 | 45.0 | 20.0 | 15.402 | O | 136 |
| A8150 | 9.0 | 26.0 | 45.0 | 20.0 | 15.101 | O | 136 |
| A8151 | 8.0 | 27.0 | 45.0 | 20.0 | 14.800 | O | 136 |
| A8152 | 7.0 | 28.0 | 45.0 | 20.0 | 14.500 | O | 136 |
| A8153 | 6.0 | 29.0 | 45.0 | 20.0 | 14.199 | O | 136 |
| A8154 | 5.0 | 30.0 | 45.0 | 20.0 | 13.898 | O | 136 |
| A8155 | 4.0 | 31.0 | 45.0 | 20.0 | 13.578 | O | 136 |
| A8156 | 3.0 | 32.0 | 45.0 | 20.0 | 13.224 | O | 136 |
| A8157 | 2.0 | 33.0 | 45.0 | 20.0 | 12.869 | O | 136 |
| A8158 | 1.0 | 34.0 | 45.0 | 20.0 | 12.514 | O | 136 |
| A8159 | 0.0 | 35.0 | 45.0 | 20.0 | 12.159 | O | 136 |
| A8160 | 23.0 | 7.0 | 50.0 | 20.0 | 19.033 | X | 136 |
| A8161 | 22.9 | 7.1 | 50.0 | 20.0 | 19.003 | X | 136 |
| A8162 | 22.8 | 7.2 | 50.0 | 20.0 | 18.973 | O | 136 |
| A8163 | 22.0 | 8.0 | 50.0 | 20.0 | 18.732 | O | 136 |
| A8164 | 20.0 | 10.0 | 50.0 | 20.0 | 18.131 | O | 136 |
| A8165 | 15.0 | 15.0 | 50.0 | 20.0 | 16.627 | O | 136 |
| A8166 | 10.0 | 20.0 | 50.0 | 20.0 | 15.122 | O | 136 |
| A8167 | 9.0 | 21.0 | 50.0 | 20.0 | 14.822 | O | 136 |
| A8168 | 8.0 | 22.0 | 50.0 | 20.0 | 14.521 | O | 136 |
| A8169 | 7.0 | 23.0 | 50.0 | 20.0 | 14.220 | O | 136 |
| A8170 | 6.0 | 24.0 | 50.0 | 20.0 | 13.919 | O | 136 |
| A8171 | 5.0 | 25.0 | 50.0 | 20.0 | 13.618 | O | 136 |
| A8172 | 4.0 | 26.0 | 50.0 | 20.0 | 13.273 | O | 136 |
| A8173 | 3.0 | 27.0 | 50.0 | 20.0 | 12.918 | O | 136 |
| A8174 | 2.0 | 28.0 | 50.0 | 20.0 | 12.563 | O | 136 |
| A8175 | 1.0 | 29.0 | 50.0 | 20.0 | 12.208 | O | 136 |
| A8176 | 0.0 | 30.0 | 50.0 | 20.0 | 11.854 | O | 136 |
| A8177 | 24.0 | 1.0 | 55.0 | 20.0 | 19.054 | X | 136 |
| A8178 | 23.9 | 1.1 | 55.0 | 20.0 | 19.024 | X | 136 |
| A8179 | 23.8 | 1.2 | 55.0 | 20.0 | 18.994 | O | 136 |
| A8180 | 23.0 | 2.0 | 55.0 | 20.0 | 18.754 | O | 136 |
| A8181 | 20.0 | 5.0 | 55.0 | 20.0 | 17.851 | O | 136 |
| A8182 | 15.0 | 10.0 | 55.0 | 20.0 | 16.347 | O | 136 |
| A8183 | 10.0 | 15.0 | 55.0 | 20.0 | 14.843 | O | 136 |
| A8184 | 9.0 | 16.0 | 55.0 | 20.0 | 14.542 | O | 136 |
| A8185 | 8.0 | 17.0 | 55.0 | 20.0 | 14.241 | O | 136 |
| A8186 | 7.0 | 18.0 | 55.0 | 20.0 | 13.940 | O | 136 |
| A8187 | 6.0 | 19.0 | 55.0 | 20.0 | 13.639 | O | 136 |
| A8188 | 5.0 | 20.0 | 55.0 | 20.0 | 13.322 | O | 136 |
| A8189 | 4.0 | 21.0 | 55.0 | 20.0 | 12.967 | O | 136 |
| A8190 | 3.0 | 22.0 | 55.0 | 20.0 | 12.612 | O | 136 |
| A8191 | 2.0 | 23.0 | 55.0 | 20.0 | 12.258 | O | 136 |

[Table 379]

| A8192 | 1.0 | 24.0 | 55.0 | 20.0 | 11.903 | O | 136 |
|---|---|---|---|---|---|---|---|
| A8193 | 0.0 | 25.0 | 55.0 | 20.0 | 11.548 | O | 136 |
| A8194 | 15.0 | 58.0 | 5.0 | 22.0 | 19.009 | X | 150 |
| A8195 | 14.9 | 58.1 | 5.0 | 22.0 | 18.979 | O | 150 |
| A8196 | 14.0 | 59.0 | 5.0 | 22.0 | 18.708 | O | 150 |
| A8197 | 10.0 | 63.0 | 5.0 | 22.0 | 17.505 | O | 150 |
| A8198 | 9.0 | 64.0 | 5.0 | 22.0 | 17.204 | O | 150 |
| A8199 | 8.0 | 65.0 | 5.0 | 22.0 | 16.903 | O | 150 |
| A8200 | 7.0 | 66.0 | 5.0 | 22.0 | 16.603 | O | 150 |
| A8201 | 6.0 | 67.0 | 5.0 | 22.0 | 16.302 | O | 150 |
| A8202 | 5.0 | 68.0 | 5.0 | 22.0 | 16.001 | O | 150 |
| A8203 | 4.0 | 69.0 | 5.0 | 22.0 | 15.700 | O | 150 |
| A8204 | 3.0 | 70.0 | 5.0 | 22.0 | 15.399 | O | 150 |
| A8205 | 2.0 | 71.0 | 5.0 | 22.0 | 15.098 | O | 150 |
| A8206 | 1.0 | 72.0 | 5.0 | 22.0 | 14.798 | O | 150 |
| A8207 | 0.0 | 73.0 | 5.0 | 22.0 | 14.471 | O | 150 |
| A8208 | 16.0 | 52.0 | 10.0 | 22.0 | 19.030 | X | 150 |
| A8209 | 15.9 | 52.1 | 10.0 | 22.0 | 19.000 | X | 150 |
| A8210 | 15.8 | 52.2 | 10.0 | 22.0 | 18.970 | O | 150 |
| A8211 | 15.0 | 53.0 | 10.0 | 22.0 | 18.730 | O | 150 |
| A8212 | 10.0 | 58.0 | 10.0 | 22.0 | 17.225 | O | 150 |
| A8213 | 9.0 | 59.0 | 10.0 | 22.0 | 16.925 | O | 150 |
| A8214 | 8.0 | 60.0 | 10.0 | 22.0 | 16.624 | O | 150 |
| A8215 | 7.0 | 61.0 | 10.0 | 22.0 | 16.323 | O | 150 |
| A8216 | 6.0 | 62.0 | 10.0 | 22.0 | 16.022 | O | 150 |
| A8217 | 5.0 | 63.0 | 10.0 | 22.0 | 15.721 | O | 150 |
| A8218 | 4.0 | 64.0 | 10.0 | 22.0 | 15.420 | O | 150 |
| A8219 | 3.0 | 65.0 | 10.0 | 22.0 | 15.120 | O | 150 |
| A8220 | 2.0 | 66.0 | 10.0 | 22.0 | 14.819 | O | 150 |
| A8221 | 1.0 | 67.0 | 10.0 | 22.0 | 14.518 | O | 150 |
| A8222 | 0.0 | 68.0 | 10.0 | 22.0 | 14.165 | O | 150 |
| A8223 | 17.0 | 46.0 | 15.0 | 22.0 | 19.052 | X | 150 |
| A8224 | 16.9 | 46.1 | 15.0 | 22.0 | 19.021 | X | 150 |
| A8225 | 16.8 | 46.2 | 15.0 | 22.0 | 18.991 | O | 150 |
| A8226 | 16.0 | 47.0 | 15.0 | 22.0 | 18.751 | O | 150 |
| A8227 | 15.0 | 48.0 | 15.0 | 22.0 | 18.450 | O | 150 |
| A8228 | 10.0 | 53.0 | 15.0 | 22.0 | 16.946 | O | 150 |
| A8229 | 9.0 | 54.0 | 15.0 | 22.0 | 16.645 | O | 150 |
| A8230 | 8.0 | 55.0 | 15.0 | 22.0 | 16.344 | O | 150 |
| A8231 | 7.0 | 56.0 | 15.0 | 22.0 | 16.043 | O | 150 |
| A8232 | 6.0 | 57.0 | 15.0 | 22.0 | 15.742 | O | 150 |
| A8233 | 5.0 | 58.0 | 15.0 | 22.0 | 15.442 | O | 150 |
| A8234 | 4.0 | 59.0 | 15.0 | 22.0 | 15.141 | O | 150 |
| A8235 | 3.0 | 60.0 | 15.0 | 22.0 | 14.840 | O | 150 |
| A8236 | 2.0 | 61.0 | 15.0 | 22.0 | 14.539 | O | 150 |
| A8237 | 1.0 | 62.0 | 15.0 | 22.0 | 14.214 | O | 150 |
| A8238 | 0.0 | 63.0 | 15.0 | 22.0 | 13.859 | O | 150 |
| A8239 | 18.0 | 40.0 | 20.0 | 22.0 | 19.073 | X | 150 |
| A8240 | 17.8 | 40.2 | 20.0 | 22.0 | 19.013 | X | 150 |
| A8241 | 17.7 | 40.3 | 20.0 | 22.0 | 18.983 | O | 150 |

[Table 380]

| A8242 | 17.0 | 41.0 | 20.0 | 22.0 | 18.772 | O | 150 |
|---|---|---|---|---|---|---|---|
| A8243 | 15.0 | 43.0 | 20.0 | 22.0 | 18.170 | O | 150 |
| A8244 | 10.0 | 48.0 | 20.0 | 22.0 | 16.666 | O | 150 |
| A8245 | 9.0 | 49.0 | 20.0 | 22.0 | 16.365 | O | 150 |
| A8246 | 8.0 | 50.0 | 20.0 | 22.0 | 16.064 | O | 150 |
| A8247 | 7.0 | 51.0 | 20.0 | 22.0 | 15.764 | O | 150 |
| A8248 | 6.0 | 52.0 | 20.0 | 22.0 | 15.463 | O | 150 |
| A8249 | 5.0 | 53.0 | 20.0 | 22.0 | 15.162 | O | 150 |
| A8250 | 4.0 | 54.0 | 20.0 | 22.0 | 14.861 | O | 150 |
| A8251 | 3.0 | 55.0 | 20.0 | 22.0 | 14.560 | O | 150 |
| A8252 | 2.0 | 56.0 | 20.0 | 22.0 | 14.259 | O | 150 |
| A8253 | 1.0 | 57.0 | 20.0 | 22.0 | 13.908 | O | 150 |
| A8254 | 0.0 | 58.0 | 20.0 | 22.0 | 13.554 | O | 150 |
| A8255 | 19.0 | 34.0 | 25.0 | 22.0 | 19.094 | X | 150 |
| A8256 | 18.7 | 34.3 | 25.0 | 22.0 | 19.004 | X | 150 |
| A8257 | 18.6 | 34.4 | 25.0 | 22.0 | 18.974 | O | 150 |
| A8258 | 18.0 | 35.0 | 25.0 | 22.0 | 18.793 | O | 150 |
| A8259 | 15.0 | 38.0 | 25.0 | 22.0 | 17.891 | O | 150 |
| A8260 | 10.0 | 43.0 | 25.0 | 22.0 | 16.387 | O | 150 |
| A8261 | 9.0 | 44.0 | 25.0 | 22.0 | 16.086 | O | 150 |
| A8262 | 8.0 | 45.0 | 25.0 | 22.0 | 15.785 | O | 150 |
| A8263 | 7.0 | 46.0 | 25.0 | 22.0 | 15.484 | O | 150 |
| A8264 | 6.0 | 47.0 | 25.0 | 22.0 | 15.183 | O | 150 |
| A8265 | 5.0 | 48.0 | 25.0 | 22.0 | 14.882 | O | 150 |
| A8266 | 4.0 | 49.0 | 25.0 | 22.0 | 14.582 | O | 150 |
| A8267 | 3.0 | 50.0 | 25.0 | 22.0 | 14.281 | O | 150 |
| A8268 | 2.0 | 51.0 | 25.0 | 22.0 | 13.957 | O | 150 |
| A8269 | 1.0 | 52.0 | 25.0 | 22.0 | 13.603 | O | 150 |
| A8270 | 0.0 | 53.0 | 25.0 | 22.0 | 13.248 | O | 150 |
| A8271 | 20.0 | 28.0 | 30.0 | 22.0 | 19.115 | X | 150 |
| A8272 | 19.7 | 28.3 | 30.0 | 22.0 | 19.025 | X | 150 |
| A8273 | 19.6 | 28.4 | 30.0 | 22.0 | 18.995 | O | 150 |
| A8274 | 19.0 | 29.0 | 30.0 | 22.0 | 18.814 | O | 150 |
| A8275 | 15.0 | 33.0 | 30.0 | 22.0 | 17.611 | O | 150 |
| A8276 | 10.0 | 38.0 | 30.0 | 22.0 | 16.107 | O | 150 |
| A8277 | 9.0 | 39.0 | 30.0 | 22.0 | 15.806 | O | 150 |
| A8278 | 8.0 | 40.0 | 30.0 | 22.0 | 15.505 | O | 150 |
| A8279 | 7.0 | 41.0 | 30.0 | 22.0 | 15.204 | O | 150 |
| A8280 | 6.0 | 42.0 | 30.0 | 22.0 | 14.904 | O | 150 |
| A8281 | 5.0 | 43.0 | 30.0 | 22.0 | 14.603 | O | 150 |
| A8282 | 4.0 | 44.0 | 30.0 | 22.0 | 14.302 | O | 150 |
| A8283 | 3.0 | 45.0 | 30.0 | 22.0 | 14.001 | O | 150 |
| A8284 | 2.0 | 46.0 | 30.0 | 22.0 | 13.652 | O | 150 |
| A8285 | 1.0 | 47.0 | 30.0 | 22.0 | 13.297 | O | 150 |
| A8286 | 0.0 | 48.0 | 30.0 | 22.0 | 12.942 | O | 150 |
| A8287 | 21.0 | 22.0 | 35.0 | 22.0 | 19.136 | X | 150 |
| A8288 | 20.6 | 22.4 | 35.0 | 22.0 | 19.016 | X | 150 |
| A8289 | 20.5 | 22.5 | 35.0 | 22.0 | 18.986 | O | 150 |
| A8290 | 20.0 | 23.0 | 35.0 | 22.0 | 18.836 | O | 150 |
| A8291 | 15.0 | 28.0 | 35.0 | 22.0 | 17.331 | O | 150 |

[Table 381]

| A8292 | 10.0 | 33.0 | 35.0 | 22.0 | 15.827 | O | 150 |
|---|---|---|---|---|---|---|---|
| A8293 | 9.0 | 34.0 | 35.0 | 22.0 | 15.526 | O | 150 |
| A8294 | 8.0 | 35.0 | 35.0 | 22.0 | 15.226 | O | 150 |
| A8295 | 7.0 | 36.0 | 35.0 | 22.0 | 14.925 | O | 150 |
| A8296 | 6.0 | 37.0 | 35.0 | 22.0 | 14.624 | O | 150 |
| A8297 | 5.0 | 38.0 | 35.0 | 22.0 | 14.323 | O | 150 |
| A8298 | 4.0 | 39.0 | 35.0 | 22.0 | 14.022 | O | 150 |
| A8299 | 3.0 | 40.0 | 35.0 | 22.0 | 13.701 | O | 150 |
| A8300 | 2.0 | 41.0 | 35.0 | 22.0 | 13.346 | O | 150 |
| A8301 | 1.0 | 42.0 | 35.0 | 22.0 | 12.991 | O | 150 |
| A8302 | 0.0 | 43.0 | 35.0 | 22.0 | 12.637 | O | 150 |
| A8303 | 22.0 | 16.0 | 40.0 | 22.0 | 19.158 | X | 150 |
| A8304 | 21.5 | 16.5 | 40.0 | 22.0 | 19.007 | X | 150 |
| A8305 | 21.4 | 16.6 | 40.0 | 22.0 | 18.977 | O | 150 |
| A8306 | 21.0 | 17.0 | 40.0 | 22.0 | 18.857 | O | 150 |
| A8307 | 15.0 | 23.0 | 40.0 | 22.0 | 17.052 | O | 150 |
| A8308 | 10.0 | 28.0 | 40.0 | 22.0 | 15.548 | O | 150 |
| A8309 | 9.0 | 29.0 | 40.0 | 22.0 | 15.247 | O | 150 |
| A8310 | 8.0 | 30.0 | 40.0 | 22.0 | 14.946 | O | 150 |
| A8311 | 7.0 | 31.0 | 40.0 | 22.0 | 14.645 | O | 150 |
| A8312 | 6.0 | 32.0 | 40.0 | 22.0 | 14.344 | O | 150 |
| A8313 | 5.0 | 33.0 | 40.0 | 22.0 | 14.043 | O | 150 |
| A8314 | 4.0 | 34.0 | 40.0 | 22.0 | 13.743 | O | 150 |
| A8315 | 3.0 | 35.0 | 40.0 | 22.0 | 13.395 | O | 150 |
| A8316 | 2.0 | 36.0 | 40.0 | 22.0 | 13.040 | O | 150 |
| A8317 | 1.0 | 37.0 | 40.0 | 22.0 | 12.686 | O | 150 |
| A8318 | 0.0 | 38.0 | 40.0 | 22.0 | 12.331 | O | 150 |
| A8319 | 23.0 | 10.0 | 45.0 | 22.0 | 19.179 | X | 150 |
| A8320 | 22.5 | 10.5 | 45.0 | 22.0 | 19.028 | X | 150 |
| A8321 | 22.4 | 10.6 | 45.0 | 22.0 | 18.998 | O | 150 |
| A8322 | 22.0 | 11.0 | 45.0 | 22.0 | 18.878 | O | 150 |
| A8323 | 20.0 | 13.0 | 45.0 | 22.0 | 18.276 | O | 150 |
| A8324 | 15.0 | 18.0 | 45.0 | 22.0 | 16.772 | O | 150 |
| A8325 | 10.0 | 23.0 | 45.0 | 22.0 | 15.268 | O | 150 |
| A8326 | 9.0 | 24.0 | 45.0 | 22.0 | 14.967 | O | 150 |
| A8327 | 8.0 | 25.0 | 45.0 | 22.0 | 14.666 | O | 150 |
| A8328 | 7.0 | 26.0 | 45.0 | 22.0 | 14.366 | O | 150 |
| A8329 | 6.0 | 27.0 | 45.0 | 22.0 | 14.065 | O | 150 |
| A8330 | 5.0 | 28.0 | 45.0 | 22.0 | 13.764 | O | 150 |
| A8331 | 4.0 | 29.0 | 45.0 | 22.0 | 13.444 | O | 150 |
| A8332 | 3.0 | 30.0 | 45.0 | 22.0 | 13.089 | O | 150 |
| A8333 | 2.0 | 31.0 | 45.0 | 22.0 | 12.735 | O | 150 |
| A8334 | 1.0 | 32.0 | 45.0 | 22.0 | 12.380 | O | 150 |
| A8335 | 0.0 | 33.0 | 45.0 | 22.0 | 12.025 | O | 150 |
| A8336 | 24.0 | 4.0 | 50.0 | 22.0 | 19.200 | X | 150 |
| A8337 | 23.4 | 4.6 | 50.0 | 22.0 | 19.020 | X | 150 |
| A8338 | 23.3 | 4.7 | 50.0 | 22.0 | 18.989 | O | 150 |
| A8339 | 23.0 | 5.0 | 50.0 | 22.0 | 18.899 | O | 150 |
| A8340 | 20.0 | 8.0 | 50.0 | 22.0 | 17.997 | O | 150 |
| A8341 | 15.0 | 13.0 | 50.0 | 22.0 | 16.493 | O | 150 |

[Table 382]

| A8342 | 10.0 | 18.0 | 50.0 | 22.0 | 14.988 | O | 150 |
|---|---|---|---|---|---|---|---|
| A8343 | 9.0 | 19.0 | 50.0 | 22.0 | 14.688 | O | 150 |
| A8344 | 8.0 | 20.0 | 50.0 | 22.0 | 14.387 | O | 150 |
| A8345 | 7.0 | 21.0 | 50.0 | 22.0 | 14.086 | O | 150 |
| A8346 | 6.0 | 22.0 | 50.0 | 22.0 | 13.785 | O | 150 |
| A8347 | 5.0 | 23.0 | 50.0 | 22.0 | 13.484 | O | 150 |
| A8348 | 4.0 | 24.0 | 50.0 | 22.0 | 13.139 | O | 150 |
| A8349 | 3.0 | 25.0 | 50.0 | 22.0 | 12.784 | O | 150 |
| A8350 | 2.0 | 26.0 | 50.0 | 22.0 | 12.429 | O | 150 |
| A8351 | 1.0 | 27.0 | 50.0 | 22.0 | 12.074 | O | 150 |
| A8352 | 0.0 | 28.0 | 50.0 | 22.0 | 11.720 | O | 150 |

Tables 383 to 403 show the composition, combustion heat amount, and GWP of the working medium of a four-component system of propane, HFO-1132(E), HFO-1234ze(E), and $CO_2$.

[Table 383]

EP 4 442 787 A1

| Case | propane | HFO-1132(E) | HFO-1234ze(E) | $CO_2$ | Heat of Combustion | Evaluation | GWP |
|---|---|---|---|---|---|---|---|
| A8353 | 12.0 | 81.0 | 5.0 | 2.0 | 19.256 | X | 1 |
| A8354 | 11.2 | 81.8 | 5.0 | 2.0 | 19.016 | X | 1 |
| A8355 | 11.1 | 81.9 | 5.0 | 2.0 | 18.986 | O | 1 |
| A8356 | 11.0 | 82.0 | 5.0 | 2.0 | 18.956 | O | 1 |
| A8357 | 10.0 | 83.0 | 5.0 | 2.0 | 18.655 | O | 1 |
| A8358 | 9.0 | 84.0 | 5.0 | 2.0 | 18.354 | O | 1 |
| A8359 | 8.0 | 85.0 | 5.0 | 2.0 | 18.053 | O | 1 |
| A8360 | 7.0 | 86.0 | 5.0 | 2.0 | 17.752 | O | 1 |
| A8361 | 6.0 | 87.0 | 5.0 | 2.0 | 17.451 | O | 1 |
| A8362 | 5.0 | 88.0 | 5.0 | 2.0 | 17.151 | O | 1 |
| A8363 | 4.0 | 89.0 | 5.0 | 2.0 | 16.850 | O | 1 |
| A8364 | 3.0 | 90.0 | 5.0 | 2.0 | 16.549 | O | 1 |
| A8365 | 2.0 | 91.0 | 5.0 | 2.0 | 16.248 | O | 1 |
| A8366 | 1.0 | 92.0 | 5.0 | 2.0 | 15.947 | O | 1 |
| A8367 | 0.0 | 93.0 | 5.0 | 2.0 | 15.620 | O | 1 |
| A8368 | 13.0 | 75.0 | 10.0 | 2.0 | 19.278 | X | 1 |
| A8369 | 12.1 | 75.9 | 10.0 | 2.0 | 19.007 | X | 1 |
| A8370 | 12.0 | 76.0 | 10.0 | 2.0 | 18.977 | O | 1 |
| A8371 | 10.0 | 78.0 | 10.0 | 2.0 | 18.375 | O | 1 |
| A8372 | 9.0 | 79.0 | 10.0 | 2.0 | 18.074 | O | 1 |
| A8373 | 8.0 | 80.0 | 10.0 | 2.0 | 17.773 | O | 1 |
| A8374 | 7.0 | 81.0 | 10.0 | 2.0 | 17.473 | O | 1 |
| A8375 | 6.0 | 82.0 | 10.0 | 2.0 | 17.172 | O | 1 |
| A8376 | 5.0 | 83.0 | 10.0 | 2.0 | 16.871 | O | 1 |
| A8377 | 4.0 | 84.0 | 10.0 | 2.0 | 16.570 | O | 1 |
| A8378 | 3.0 | 85.0 | 10.0 | 2.0 | 16.269 | O | 1 |
| A8379 | 2.0 | 86.0 | 10.0 | 2.0 | 15.968 | O | 1 |
| A8380 | 1.0 | 87.0 | 10.0 | 2.0 | 15.668 | O | 1 |
| A8381 | 0.0 | 88.0 | 10.0 | 2.0 | 15.315 | O | 1 |
| A8382 | 14.0 | 69.0 | 15.0 | 2.0 | 19.299 | X | 1 |
| A8383 | 13.1 | 69.9 | 15.0 | 2.0 | 19.028 | X | 1 |
| A8384 | 13.0 | 70.0 | 15.0 | 2.0 | 18.998 | O | 1 |
| A8385 | 10.0 | 73.0 | 15.0 | 2.0 | 18.095 | O | 1 |
| A8386 | 9.0 | 74.0 | 15.0 | 2.0 | 17.795 | O | 1 |
| A8387 | 8.0 | 75.0 | 15.0 | 2.0 | 17.494 | O | 1 |
| A8388 | 7.0 | 76.0 | 15.0 | 2.0 | 17.193 | O | 1 |
| A8389 | 6.0 | 77.0 | 15.0 | 2.0 | 16.892 | O | 1 |
| A8390 | 5.0 | 78.0 | 15.0 | 2.0 | 16.591 | O | 1 |
| A8391 | 4.0 | 79.0 | 15.0 | 2.0 | 16.291 | O | 1 |
| A8392 | 3.0 | 80.0 | 15.0 | 2.0 | 15.990 | O | 1 |
| A8393 | 2.0 | 81.0 | 15.0 | 2.0 | 15.689 | O | 1 |
| A8394 | 1.0 | 82.0 | 15.0 | 2.0 | 15.364 | O | 1 |
| A8395 | 0.0 | 83.0 | 15.0 | 2.0 | 15.009 | O | 1 |
| A8396 | 14.0 | 64.0 | 20.0 | 2.0 | 19.019 | X | 1 |
| A8397 | 13.9 | 64.1 | 20.0 | 2.0 | 18.989 | O | 1 |
| A8398 | 13.0 | 65.0 | 20.0 | 2.0 | 18.718 | O | 1 |
| A8399 | 10.0 | 68.0 | 20.0 | 2.0 | 17.816 | O | 1 |
| A8400 | 9.0 | 69.0 | 20.0 | 2.0 | 17.515 | O | 1 |
| A8401 | 8.0 | 70.0 | 20.0 | 2.0 | 17.214 | O | 1 |
| A8402 | 7.0 | 71.0 | 20.0 | 2.0 | 16.913 | O | 1 |

[Table 384]

403

EP 4 442 787 A1

| A8403 | 6.0 | 72.0 | 20.0 | 2.0 | 16.613 | O | 1 |
| A8404 | 5.0 | 73.0 | 20.0 | 2.0 | 16.312 | O | 1 |
| A8405 | 4.0 | 74.0 | 20.0 | 2.0 | 16.011 | O | 1 |
| A8406 | 3.0 | 75.0 | 20.0 | 2.0 | 15.710 | O | 1 |
| A8407 | 2.0 | 76.0 | 20.0 | 2.0 | 15.409 | O | 1 |
| A8408 | 1.0 | 77.0 | 20.0 | 2.0 | 15.058 | O | 1 |
| A8409 | 0.0 | 78.0 | 20.0 | 2.0 | 14.703 | O | 1 |
| A8410 | 15.0 | 58.0 | 25.0 | 2.0 | 19.040 | X | 1 |
| A8411 | 14.9 | 58.1 | 25.0 | 2.0 | 19.010 | X | 1 |
| A8412 | 14.8 | 58.2 | 25.0 | 2.0 | 18.980 | O | 1 |
| A8413 | 14.0 | 59.0 | 25.0 | 2.0 | 18.740 | O | 1 |
| A8414 | 10.0 | 63.0 | 25.0 | 2.0 | 17.536 | O | 1 |
| A8415 | 9.0 | 64.0 | 25.0 | 2.0 | 17.235 | O | 1 |
| A8416 | 8.0 | 65.0 | 25.0 | 2.0 | 16.935 | O | 1 |
| A8417 | 7.0 | 66.0 | 25.0 | 2.0 | 16.634 | O | 1 |
| A8418 | 6.0 | 67.0 | 25.0 | 2.0 | 16.333 | O | 1 |
| A8419 | 5.0 | 68.0 | 25.0 | 2.0 | 16.032 | O | 1 |
| A8420 | 4.0 | 69.0 | 25.0 | 2.0 | 15.731 | O | 1 |
| A8421 | 3.0 | 70.0 | 25.0 | 2.0 | 15.430 | O | 1 |
| A8422 | 2.0 | 71.0 | 25.0 | 2.0 | 15.107 | O | 1 |
| A8423 | 1.0 | 72.0 | 25.0 | 2.0 | 14.752 | O | 1 |
| A8424 | 0.0 | 73.0 | 25.0 | 2.0 | 14.398 | O | 1 |
| A8425 | 16.0 | 52.0 | 30.0 | 2.0 | 19.062 | X | 1 |
| A8426 | 15.8 | 52.2 | 30.0 | 2.0 | 19.001 | X | 1 |
| A8427 | 15.7 | 52.3 | 30.0 | 2.0 | 18.971 | O | 1 |
| A8428 | 15.0 | 53.0 | 30.0 | 2.0 | 18.761 | O | 1 |
| A8429 | 10.0 | 58.0 | 30.0 | 2.0 | 17.257 | O | 1 |
| A8430 | 9.0 | 59.0 | 30.0 | 2.0 | 16.956 | O | 1 |
| A8431 | 8.0 | 60.0 | 30.0 | 2.0 | 16.655 | O | 1 |
| A8432 | 7.0 | 61.0 | 30.0 | 2.0 | 16.354 | O | 1 |
| A8433 | 6.0 | 62.0 | 30.0 | 2.0 | 16.053 | O | 1 |
| A8434 | 5.0 | 63.0 | 30.0 | 2.0 | 15.752 | O | 1 |
| A8435 | 4.0 | 64.0 | 30.0 | 2.0 | 15.452 | O | 1 |
| A8436 | 3.0 | 65.0 | 30.0 | 2.0 | 15.151 | O | 1 |
| A8437 | 2.0 | 66.0 | 30.0 | 2.0 | 14.801 | O | 1 |
| A8438 | 1.0 | 67.0 | 30.0 | 2.0 | 14.447 | O | 1 |
| A8439 | 0.0 | 68.0 | 30.0 | 2.0 | 14.092 | O | 1 |
| A8440 | 17.0 | 46.0 | 35.0 | 2.0 | 19.083 | X | 1 |
| A8441 | 16.8 | 46.2 | 35.0 | 2.0 | 19.023 | X | 1 |
| A8442 | 16.7 | 46.3 | 35.0 | 2.0 | 18.993 | O | 1 |
| A8443 | 16.0 | 47.0 | 35.0 | 2.0 | 18.782 | O | 1 |
| A8444 | 15.0 | 48.0 | 35.0 | 2.0 | 18.481 | O | 1 |
| A8445 | 10.0 | 53.0 | 35.0 | 2.0 | 16.977 | O | 1 |
| A8446 | 9.0 | 54.0 | 35.0 | 2.0 | 16.676 | O | 1 |
| A8447 | 8.0 | 55.0 | 35.0 | 2.0 | 16.375 | O | 1 |
| A8448 | 7.0 | 56.0 | 35.0 | 2.0 | 16.074 | O | 1 |
| A8449 | 6.0 | 57.0 | 35.0 | 2.0 | 15.774 | O | 1 |
| A8450 | 5.0 | 58.0 | 35.0 | 2.0 | 15.473 | O | 1 |
| A8451 | 4.0 | 59.0 | 35.0 | 2.0 | 15.172 | O | 1 |
| A8452 | 3.0 | 60.0 | 35.0 | 2.0 | 14.851 | O | 1 |

[Table 385]

404

| A8453 | 2.0 | 61.0 | 35.0 | 2.0 | 14.496 | O | 1 |
|---|---|---|---|---|---|---|---|
| A8454 | 1.0 | 62.0 | 35.0 | 2.0 | 14.141 | O | 1 |
| A8455 | 0.0 | 63.0 | 35.0 | 2.0 | 13.786 | O | 1 |
| A8456 | 18.0 | 40.0 | 40.0 | 2.0 | 19.104 | X | 1 |
| A8457 | 17.7 | 40.3 | 40.0 | 2.0 | 19.014 | X | 1 |
| A8458 | 17.6 | 40.4 | 40.0 | 2.0 | 18.984 | O | 1 |
| A8459 | 17.0 | 41.0 | 40.0 | 2.0 | 18.803 | O | 1 |
| A8460 | 15.0 | 43.0 | 40.0 | 2.0 | 18.202 | O | 1 |
| A8461 | 10.0 | 48.0 | 40.0 | 2.0 | 16.697 | O | 1 |
| A8462 | 9.0 | 49.0 | 40.0 | 2.0 | 16.397 | O | 1 |
| A8463 | 8.0 | 50.0 | 40.0 | 2.0 | 16.096 | O | 1 |
| A8464 | 7.0 | 51.0 | 40.0 | 2.0 | 15.795 | O | 1 |
| A8465 | 6.0 | 52.0 | 40.0 | 2.0 | 15.494 | O | 1 |
| A8466 | 5.0 | 53.0 | 40.0 | 2.0 | 15.193 | O | 1 |
| A8467 | 4.0 | 54.0 | 40.0 | 2.0 | 14.892 | O | 1 |
| A8468 | 3.0 | 55.0 | 40.0 | 2.0 | 14.545 | O | 1 |
| A8469 | 2.0 | 56.0 | 40.0 | 2.0 | 14.190 | O | 1 |
| A8470 | 1.0 | 57.0 | 40.0 | 2.0 | 13.835 | O | 1 |
| A8471 | 0.0 | 58.0 | 40.0 | 2.0 | 13.481 | O | 1 |
| A8472 | 19.0 | 34.0 | 45.0 | 2.0 | 19.125 | X | 1 |
| A8473 | 18.6 | 34.4 | 45.0 | 2.0 | 19.005 | X | 1 |
| A8474 | 18.5 | 34.5 | 45.0 | 2.0 | 18.975 | O | 1 |
| A8475 | 18.0 | 35.0 | 45.0 | 2.0 | 18.824 | O | 1 |
| A8476 | 15.0 | 38.0 | 45.0 | 2.0 | 17.922 | O | 1 |
| A8477 | 10.0 | 43.0 | 45.0 | 2.0 | 16.418 | O | 1 |
| A8478 | 9.0 | 44.0 | 45.0 | 2.0 | 16.117 | O | 1 |
| A8479 | 8.0 | 45.0 | 45.0 | 2.0 | 15.816 | O | 1 |
| A8480 | 7.0 | 46.0 | 45.0 | 2.0 | 15.515 | O | 1 |
| A8481 | 6.0 | 47.0 | 45.0 | 2.0 | 15.214 | O | 1 |
| A8482 | 5.0 | 48.0 | 45.0 | 2.0 | 14.914 | O | 1 |
| A8483 | 4.0 | 49.0 | 45.0 | 2.0 | 14.594 | O | 1 |
| A8484 | 3.0 | 50.0 | 45.0 | 2.0 | 14.239 | O | 1 |
| A8485 | 2.0 | 51.0 | 45.0 | 2.0 | 13.884 | O | 1 |
| A8486 | 1.0 | 52.0 | 45.0 | 2.0 | 13.530 | O | 1 |
| A8487 | 0.0 | 53.0 | 45.0 | 2.0 | 13.175 | O | 1 |
| A8488 | 20.0 | 28.0 | 50.0 | 2.0 | 19.146 | X | 1 |
| A8489 | 19.6 | 28.4 | 50.0 | 2.0 | 19.026 | X | 1 |
| A8490 | 19.5 | 28.5 | 50.0 | 2.0 | 18.996 | O | 1 |
| A8491 | 19.0 | 29.0 | 50.0 | 2.0 | 18.846 | O | 1 |
| A8492 | 15.0 | 33.0 | 50.0 | 2.0 | 17.642 | O | 1 |
| A8493 | 10.0 | 38.0 | 50.0 | 2.0 | 16.138 | O | 1 |
| A8494 | 9.0 | 39.0 | 50.0 | 2.0 | 15.837 | O | 1 |
| A8495 | 8.0 | 40.0 | 50.0 | 2.0 | 15.536 | O | 1 |
| A8496 | 7.0 | 41.0 | 50.0 | 2.0 | 15.236 | O | 1 |
| A8497 | 6.0 | 42.0 | 50.0 | 2.0 | 14.935 | O | 1 |
| A8498 | 5.0 | 43.0 | 50.0 | 2.0 | 14.634 | O | 1 |
| A8499 | 4.0 | 44.0 | 50.0 | 2.0 | 14.288 | O | 1 |
| A8500 | 3.0 | 45.0 | 50.0 | 2.0 | 13.934 | O | 1 |
| A8501 | 2.0 | 46.0 | 50.0 | 2.0 | 13.579 | O | 1 |
| A8502 | 1.0 | 47.0 | 50.0 | 2.0 | 13.224 | O | 1 |

[Table 386]

| A8503 | 0.0 | 48.0 | 50.0 | 2.0 | 12.869 | O | 1 |
| A8504 | 21.0 | 22.0 | 55.0 | 2.0 | 19.168 | X | 1 |
| A8505 | 20.5 | 22.5 | 55.0 | 2.0 | 19.017 | X | 1 |
| A8506 | 20.4 | 22.6 | 55.0 | 2.0 | 18.987 | O | 1 |
| A8507 | 20.0 | 23.0 | 55.0 | 2.0 | 18.867 | O | 1 |
| A8508 | 15.0 | 28.0 | 55.0 | 2.0 | 17.363 | O | 1 |
| A8509 | 10.0 | 33.0 | 55.0 | 2.0 | 15.858 | O | 1 |
| A8510 | 9.0 | 34.0 | 55.0 | 2.0 | 15.558 | O | 1 |
| A8511 | 8.0 | 35.0 | 55.0 | 2.0 | 15.257 | O | 1 |
| A8512 | 7.0 | 36.0 | 55.0 | 2.0 | 14.956 | O | 1 |
| A8513 | 6.0 | 37.0 | 55.0 | 2.0 | 14.655 | O | 1 |
| A8514 | 5.0 | 38.0 | 55.0 | 2.0 | 14.337 | O | 1 |
| A8515 | 4.0 | 39.0 | 55.0 | 2.0 | 13.983 | O | 1 |
| A8516 | 3.0 | 40.0 | 55.0 | 2.0 | 13.628 | O | 1 |
| A8517 | 2.0 | 41.0 | 55.0 | 2.0 | 13.273 | O | 1 |
| A8518 | 1.0 | 42.0 | 55.0 | 2.0 | 12.918 | O | 1 |
| A8519 | 0.0 | 43.0 | 55.0 | 2.0 | 12.564 | O | 1 |
| A8520 | 22.0 | 16.0 | 60.0 | 2.0 | 19.189 | X | 1 |
| A8521 | 21.4 | 16.6 | 60.0 | 2.0 | 19.008 | X | 1 |
| A8522 | 21.3 | 16.7 | 60.0 | 2.0 | 18.978 | O | 1 |
| A8523 | 21.0 | 17.0 | 60.0 | 2.0 | 18.888 | O | 1 |
| A8524 | 20.0 | 18.0 | 60.0 | 2.0 | 18.587 | O | 1 |
| A8525 | 15.0 | 23.0 | 60.0 | 2.0 | 17.083 | O | 1 |
| A8526 | 10.0 | 28.0 | 60.0 | 2.0 | 15.579 | O | 1 |
| A8527 | 9.0 | 29.0 | 60.0 | 2.0 | 15.278 | O | 1 |
| A8528 | 8.0 | 30.0 | 60.0 | 2.0 | 14.977 | O | 1 |
| A8529 | 7.0 | 31.0 | 60.0 | 2.0 | 14.676 | O | 1 |
| A8530 | 6.0 | 32.0 | 60.0 | 2.0 | 14.376 | O | 1 |
| A8531 | 5.0 | 33.0 | 60.0 | 2.0 | 14.032 | O | 1 |
| A8532 | 4.0 | 34.0 | 60.0 | 2.0 | 13.677 | O | 1 |
| A8533 | 3.0 | 35.0 | 60.0 | 2.0 | 13.322 | O | 1 |
| A8534 | 2.0 | 36.0 | 60.0 | 2.0 | 12.968 | O | 1 |
| A8535 | 1.0 | 37.0 | 60.0 | 2.0 | 12.613 | O | 1 |
| A8536 | 0.0 | 38.0 | 60.0 | 2.0 | 12.258 | O | 1 |
| A8537 | 23.0 | 10.0 | 65.0 | 2.0 | 19.210 | X | 1 |
| A8538 | 22.4 | 10.6 | 65.0 | 2.0 | 19.030 | X | 1 |
| A8539 | 22.3 | 10.7 | 65.0 | 2.0 | 18.999 | O | 1 |
| A8540 | 22.0 | 11.0 | 65.0 | 2.0 | 18.909 | O | 1 |
| A8541 | 20.0 | 13.0 | 65.0 | 2.0 | 18.308 | O | 1 |
| A8542 | 15.0 | 18.0 | 65.0 | 2.0 | 16.803 | O | 1 |
| A8543 | 10.0 | 23.0 | 65.0 | 2.0 | 15.299 | O | 1 |
| A8544 | 9.0 | 24.0 | 65.0 | 2.0 | 14.998 | O | 1 |
| A8545 | 8.0 | 25.0 | 65.0 | 2.0 | 14.698 | O | 1 |
| A8546 | 7.0 | 26.0 | 65.0 | 2.0 | 14.397 | O | 1 |
| A8547 | 6.0 | 27.0 | 65.0 | 2.0 | 14.081 | O | 1 |
| A8548 | 5.0 | 28.0 | 65.0 | 2.0 | 13.726 | O | 1 |
| A8549 | 4.0 | 29.0 | 65.0 | 2.0 | 13.371 | O | 1 |
| A8550 | 3.0 | 30.0 | 65.0 | 2.0 | 13.017 | O | 1 |
| A8551 | 2.0 | 31.0 | 65.0 | 2.0 | 12.662 | O | 1 |
| A8552 | 1.0 | 32.0 | 65.0 | 2.0 | 12.307 | O | 1 |

[Table 387]

| A8553 | 0.0 | 33.0 | 65.0 | 2.0 | 11.952 | O | 1 |
|---|---|---|---|---|---|---|---|
| A8554 | 24.0 | 4.0 | 70.0 | 2.0 | 19.231 | X | 1 |
| A8555 | 23.3 | 4.7 | 70.0 | 2.0 | 19.021 | X | 1 |
| A8556 | 23.2 | 4.8 | 70.0 | 2.0 | 18.991 | O | 1 |
| A8557 | 23.0 | 5.0 | 70.0 | 2.0 | 18.930 | O | 1 |
| A8558 | 20.0 | 8.0 | 70.0 | 2.0 | 18.028 | O | 1 |
| A8559 | 15.0 | 13.0 | 70.0 | 2.0 | 16.524 | O | 1 |
| A8560 | 10.0 | 18.0 | 70.0 | 2.0 | 15.020 | O | 1 |
| A8561 | 9.0 | 19.0 | 70.0 | 2.0 | 14.719 | O | 1 |
| A8562 | 8.0 | 20.0 | 70.0 | 2.0 | 14.418 | O | 1 |
| A8563 | 7.0 | 21.0 | 70.0 | 2.0 | 14.117 | O | 1 |
| A8564 | 6.0 | 22.0 | 70.0 | 2.0 | 13.775 | O | 1 |
| A8565 | 5.0 | 23.0 | 70.0 | 2.0 | 13.420 | O | 1 |
| A8566 | 4.0 | 24.0 | 70.0 | 2.0 | 13.066 | O | 1 |
| A8567 | 3.0 | 25.0 | 70.0 | 2.0 | 12.711 | O | 1 |
| A8568 | 2.0 | 26.0 | 70.0 | 2.0 | 12.356 | O | 1 |
| A8569 | 1.0 | 27.0 | 70.0 | 2.0 | 12.001 | O | 1 |
| A8570 | 0.0 | 28.0 | 70.0 | 2.0 | 11.647 | O | 1 |
| A8571 | 13.0 | 78.0 | 5.0 | 4.0 | 19.232 | X | 1 |
| A8572 | 12.3 | 78.7 | 5.0 | 4.0 | 19.022 | X | 1 |
| A8573 | 12.2 | 78.8 | 5.0 | 4.0 | 18.992 | O | 1 |
| A8574 | 12.0 | 79.0 | 5.0 | 4.0 | 18.931 | O | 1 |
| A8575 | 10.0 | 81.0 | 5.0 | 4.0 | 18.330 | O | 1 |
| A8576 | 9.0 | 82.0 | 5.0 | 4.0 | 18.029 | O | 1 |
| A8577 | 8.0 | 83.0 | 5.0 | 4.0 | 17.728 | O | 1 |
| A8578 | 7.0 | 84.0 | 5.0 | 4.0 | 17.427 | O | 1 |
| A8579 | 6.0 | 85.0 | 5.0 | 4.0 | 17.126 | O | 1 |
| A8580 | 5.0 | 86.0 | 5.0 | 4.0 | 16.826 | O | 1 |
| A8581 | 4.0 | 87.0 | 5.0 | 4.0 | 16.525 | O | 1 |
| A8582 | 3.0 | 88.0 | 5.0 | 4.0 | 16.224 | O | 1 |
| A8583 | 2.0 | 89.0 | 5.0 | 4.0 | 15.923 | O | 1 |
| A8584 | 1.0 | 90.0 | 5.0 | 4.0 | 15.622 | O | 1 |
| A8585 | 0.0 | 91.0 | 5.0 | 4.0 | 15.295 | O | 1 |
| A8586 | 14.0 | 72.0 | 10.0 | 4.0 | 19.253 | X | 1 |
| A8587 | 13.2 | 72.8 | 10.0 | 4.0 | 19.013 | X | 1 |
| A8588 | 13.1 | 72.9 | 10.0 | 4.0 | 18.983 | O | 1 |
| A8589 | 13.0 | 73.0 | 10.0 | 4.0 | 18.953 | O | 1 |
| A8590 | 10.0 | 76.0 | 10.0 | 4.0 | 18.050 | O | 1 |
| A8591 | 9.0 | 77.0 | 10.0 | 4.0 | 17.749 | O | 1 |
| A8592 | 8.0 | 78.0 | 10.0 | 4.0 | 17.448 | O | 1 |
| A8593 | 7.0 | 79.0 | 10.0 | 4.0 | 17.148 | O | 1 |
| A8594 | 6.0 | 80.0 | 10.0 | 4.0 | 16.847 | O | 1 |
| A8595 | 5.0 | 81.0 | 10.0 | 4.0 | 16.546 | O | 1 |
| A8596 | 4.0 | 82.0 | 10.0 | 4.0 | 16.245 | O | 1 |
| A8597 | 3.0 | 83.0 | 10.0 | 4.0 | 15.944 | O | 1 |
| A8598 | 2.0 | 84.0 | 10.0 | 4.0 | 15.643 | O | 1 |
| A8599 | 1.0 | 85.0 | 10.0 | 4.0 | 15.343 | O | 1 |
| A8600 | 0.0 | 86.0 | 10.0 | 4.0 | 14.990 | O | 1 |
| A8601 | 15.0 | 66.0 | 15.0 | 4.0 | 19.275 | X | 1 |
| A8602 | 14.1 | 66.9 | 15.0 | 4.0 | 19.004 | X | 1 |

[Table 388]

| | | | | | | | |
|---|---|---|---|---|---|---|---|
| A8603 | 14.0 | 67.0 | 15.0 | 4.0 | 18.974 | O | 1 |
| A8604 | 10.0 | 71.0 | 15.0 | 4.0 | 17.770 | O | 1 |
| A8605 | 9.0 | 72.0 | 15.0 | 4.0 | 17.470 | O | 1 |
| A8606 | 8.0 | 73.0 | 15.0 | 4.0 | 17.169 | O | 1 |
| A8607 | 7.0 | 74.0 | 15.0 | 4.0 | 16.868 | O | 1 |
| A8608 | 6.0 | 75.0 | 15.0 | 4.0 | 16.567 | O | 1 |
| A8609 | 5.0 | 76.0 | 15.0 | 4.0 | 16.266 | O | 1 |
| A8610 | 4.0 | 77.0 | 15.0 | 4.0 | 15.965 | O | 1 |
| A8611 | 3.0 | 78.0 | 15.0 | 4.0 | 15.665 | O | 1 |
| A8612 | 2.0 | 79.0 | 15.0 | 4.0 | 15.364 | O | 1 |
| A8613 | 1.0 | 80.0 | 15.0 | 4.0 | 15.039 | O | 1 |
| A8614 | 0.0 | 81.0 | 15.0 | 4.0 | 14.684 | O | 1 |
| A8615 | 16.0 | 60.0 | 20.0 | 4.0 | 19.296 | X | 1 |
| A8616 | 15.1 | 60.9 | 20.0 | 4.0 | 19.025 | X | 1 |
| A8617 | 15.0 | 61.0 | 20.0 | 4.0 | 18.995 | O | 1 |
| A8618 | 10.0 | 66.0 | 20.0 | 4.0 | 17.491 | O | 1 |
| A8619 | 9.0 | 67.0 | 20.0 | 4.0 | 17.190 | O | 1 |
| A8620 | 8.0 | 68.0 | 20.0 | 4.0 | 16.889 | O | 1 |
| A8621 | 7.0 | 69.0 | 20.0 | 4.0 | 16.588 | O | 1 |
| A8622 | 6.0 | 70.0 | 20.0 | 4.0 | 16.288 | O | 1 |
| A8623 | 5.0 | 71.0 | 20.0 | 4.0 | 15.987 | O | 1 |
| A8624 | 4.0 | 72.0 | 20.0 | 4.0 | 15.686 | O | 1 |
| A8625 | 3.0 | 73.0 | 20.0 | 4.0 | 15.385 | O | 1 |
| A8626 | 2.0 | 74.0 | 20.0 | 4.0 | 15.084 | O | 1 |
| A8627 | 1.0 | 75.0 | 20.0 | 4.0 | 14.733 | O | 1 |
| A8628 | 0.0 | 76.0 | 20.0 | 4.0 | 14.378 | O | 1 |
| A8629 | 16.0 | 55.0 | 25.0 | 4.0 | 19.016 | X | 1 |
| A8630 | 15.9 | 55.1 | 25.0 | 4.0 | 18.986 | O | 1 |
| A8631 | 15.0 | 56.0 | 25.0 | 4.0 | 18.715 | O | 1 |
| A8632 | 10.0 | 61.0 | 25.0 | 4.0 | 17.211 | O | 1 |
| A8633 | 9.0 | 62.0 | 25.0 | 4.0 | 16.910 | O | 1 |
| A8634 | 8.0 | 63.0 | 25.0 | 4.0 | 16.610 | O | 1 |
| A8635 | 7.0 | 64.0 | 25.0 | 4.0 | 16.309 | O | 1 |
| A8636 | 6.0 | 65.0 | 25.0 | 4.0 | 16.008 | O | 1 |
| A8637 | 5.0 | 66.0 | 25.0 | 4.0 | 15.707 | O | 1 |
| A8638 | 4.0 | 67.0 | 25.0 | 4.0 | 15.406 | O | 1 |
| A8639 | 3.0 | 68.0 | 25.0 | 4.0 | 15.105 | O | 1 |
| A8640 | 2.0 | 69.0 | 25.0 | 4.0 | 14.782 | O | 1 |
| A8641 | 1.0 | 70.0 | 25.0 | 4.0 | 14.427 | O | 1 |
| A8642 | 0.0 | 71.0 | 25.0 | 4.0 | 14.073 | O | 1 |
| A8643 | 17.0 | 49.0 | 30.0 | 4.0 | 19.037 | X | 1 |
| A8644 | 16.9 | 49.1 | 30.0 | 4.0 | 19.007 | X | 1 |
| A8645 | 16.8 | 49.2 | 30.0 | 4.0 | 18.977 | O | 1 |
| A8646 | 16.0 | 50.0 | 30.0 | 4.0 | 18.737 | O | 1 |
| A8647 | 15.0 | 51.0 | 30.0 | 4.0 | 18.436 | O | 1 |
| A8648 | 10.0 | 56.0 | 30.0 | 4.0 | 16.932 | O | 1 |
| A8649 | 9.0 | 57.0 | 30.0 | 4.0 | 16.631 | O | 1 |
| A8650 | 8.0 | 58.0 | 30.0 | 4.0 | 16.330 | O | 1 |
| A8651 | 7.0 | 59.0 | 30.0 | 4.0 | 16.029 | O | 1 |
| A8652 | 6.0 | 60.0 | 30.0 | 4.0 | 15.728 | O | 1 |

[Table 389]

| A8653 | 5.0 | 61.0 | 30.0 | 4.0 | 15.427 | O | 1 |
|---|---|---|---|---|---|---|---|
| A8654 | 4.0 | 62.0 | 30.0 | 4.0 | 15.127 | O | 1 |
| A8655 | 3.0 | 63.0 | 30.0 | 4.0 | 14.826 | O | 1 |
| A8656 | 2.0 | 64.0 | 30.0 | 4.0 | 14.476 | O | 1 |
| A8657 | 1.0 | 65.0 | 30.0 | 4.0 | 14.122 | O | 1 |
| A8658 | 0.0 | 66.0 | 30.0 | 4.0 | 13.767 | O | 1 |
| A8659 | 18.0 | 43.0 | 35.0 | 4.0 | 19.059 | X | 1 |
| A8660 | 17.9 | 43.1 | 35.0 | 4.0 | 19.029 | X | 1 |
| A8661 | 17.8 | 43.2 | 35.0 | 4.0 | 18.998 | O | 1 |
| A8662 | 17.0 | 44.0 | 35.0 | 4.0 | 18.758 | O | 1 |
| A8663 | 15.0 | 46.0 | 35.0 | 4.0 | 18.156 | O | 1 |
| A8664 | 10.0 | 51.0 | 35.0 | 4.0 | 16.652 | O | 1 |
| A8665 | 9.0 | 52.0 | 35.0 | 4.0 | 16.351 | O | 1 |
| A8666 | 8.0 | 53.0 | 35.0 | 4.0 | 16.050 | O | 1 |
| A8667 | 7.0 | 54.0 | 35.0 | 4.0 | 15.749 | O | 1 |
| A8668 | 6.0 | 55.0 | 35.0 | 4.0 | 15.449 | O | 1 |
| A8669 | 5.0 | 56.0 | 35.0 | 4.0 | 15.148 | O | 1 |
| A8670 | 4.0 | 57.0 | 35.0 | 4.0 | 14.847 | O | 1 |
| A8671 | 3.0 | 58.0 | 35.0 | 4.0 | 14.525 | O | 1 |
| A8672 | 2.0 | 59.0 | 35.0 | 4.0 | 14.171 | O | 1 |
| A8673 | 1.0 | 60.0 | 35.0 | 4.0 | 13.816 | O | 1 |
| A8674 | 0.0 | 61.0 | 35.0 | 4.0 | 13.461 | O | 1 |
| A8675 | 19.0 | 37.0 | 40.0 | 4.0 | 19.080 | X | 1 |
| A8676 | 18.8 | 37.2 | 40.0 | 4.0 | 19.020 | X | 1 |
| A8677 | 18.7 | 37.3 | 40.0 | 4.0 | 18.990 | O | 1 |
| A8678 | 18.0 | 38.0 | 40.0 | 4.0 | 18.779 | O | 1 |
| A8679 | 15.0 | 41.0 | 40.0 | 4.0 | 17.876 | O | 1 |
| A8680 | 10.0 | 46.0 | 40.0 | 4.0 | 16.372 | O | 1 |
| A8681 | 9.0 | 47.0 | 40.0 | 4.0 | 16.072 | O | 1 |
| A8682 | 8.0 | 48.0 | 40.0 | 4.0 | 15.771 | O | 1 |
| A8683 | 7.0 | 49.0 | 40.0 | 4.0 | 15.470 | O | 1 |
| A8684 | 6.0 | 50.0 | 40.0 | 4.0 | 15.169 | O | 1 |
| A8685 | 5.0 | 51.0 | 40.0 | 4.0 | 14.868 | O | 1 |
| A8686 | 4.0 | 52.0 | 40.0 | 4.0 | 14.567 | O | 1 |
| A8687 | 3.0 | 53.0 | 40.0 | 4.0 | 14.220 | O | 1 |
| A8688 | 2.0 | 54.0 | 40.0 | 4.0 | 13.865 | O | 1 |
| A8689 | 1.0 | 55.0 | 40.0 | 4.0 | 13.510 | O | 1 |
| A8690 | 0.0 | 56.0 | 40.0 | 4.0 | 13.156 | O | 1 |
| A8691 | 20.0 | 31.0 | 45.0 | 4.0 | 19.101 | X | 1 |
| A8692 | 19.7 | 31.3 | 45.0 | 4.0 | 19.011 | X | 1 |
| A8693 | 19.6 | 31.4 | 45.0 | 4.0 | 18.981 | O | 1 |
| A8694 | 19.0 | 32.0 | 45.0 | 4.0 | 18.800 | O | 1 |
| A8695 | 15.0 | 36.0 | 45.0 | 4.0 | 17.597 | O | 1 |
| A8696 | 10.0 | 41.0 | 45.0 | 4.0 | 16.093 | O | 1 |
| A8697 | 9.0 | 42.0 | 45.0 | 4.0 | 15.792 | O | 1 |
| A8698 | 8.0 | 43.0 | 45.0 | 4.0 | 15.491 | O | 1 |
| A8699 | 7.0 | 44.0 | 45.0 | 4.0 | 15.190 | O | 1 |
| A8700 | 6.0 | 45.0 | 45.0 | 4.0 | 14.889 | O | 1 |
| A8701 | 5.0 | 46.0 | 45.0 | 4.0 | 14.589 | O | 1 |
| A8702 | 4.0 | 47.0 | 45.0 | 4.0 | 14.269 | O | 1 |

[Table 390]

| A8703 | 3.0 | 48.0 | 45.0 | 4.0 | 13.914 | O | 1 |
|---|---|---|---|---|---|---|---|
| A8704 | 2.0 | 49.0 | 45.0 | 4.0 | 13.559 | O | 1 |
| A8705 | 1.0 | 50.0 | 45.0 | 4.0 | 13.205 | O | 1 |
| A8706 | 0.0 | 51.0 | 45.0 | 4.0 | 12.850 | O | 1 |
| A8707 | 21.0 | 25.0 | 50.0 | 4.0 | 19.122 | X | 1 |
| A8708 | 20.6 | 25.4 | 50.0 | 4.0 | 19.002 | X | 1 |
| A8709 | 20.5 | 25.5 | 50.0 | 4.0 | 18.972 | O | 1 |
| A8710 | 20.0 | 26.0 | 50.0 | 4.0 | 18.821 | O | 1 |
| A8711 | 15.0 | 31.0 | 50.0 | 4.0 | 17.317 | O | 1 |
| A8712 | 10.0 | 36.0 | 50.0 | 4.0 | 15.813 | O | 1 |
| A8713 | 9.0 | 37.0 | 50.0 | 4.0 | 15.512 | O | 1 |
| A8714 | 8.0 | 38.0 | 50.0 | 4.0 | 15.211 | O | 1 |
| A8715 | 7.0 | 39.0 | 50.0 | 4.0 | 14.911 | O | 1 |
| A8716 | 6.0 | 40.0 | 50.0 | 4.0 | 14.610 | O | 1 |
| A8717 | 5.0 | 41.0 | 50.0 | 4.0 | 14.309 | O | 1 |
| A8718 | 4.0 | 42.0 | 50.0 | 4.0 | 13.963 | O | 1 |
| A8719 | 3.0 | 43.0 | 50.0 | 4.0 | 13.609 | O | 1 |
| A8720 | 2.0 | 44.0 | 50.0 | 4.0 | 13.254 | O | 1 |
| A8721 | 1.0 | 45.0 | 50.0 | 4.0 | 12.899 | O | 1 |
| A8722 | 0.0 | 46.0 | 50.0 | 4.0 | 12.544 | O | 1 |
| A8723 | 22.0 | 19.0 | 55.0 | 4.0 | 19.143 | X | 1 |
| A8724 | 21.6 | 19.4 | 55.0 | 4.0 | 19.023 | X | 1 |
| A8725 | 21.5 | 19.5 | 55.0 | 4.0 | 18.993 | O | 1 |
| A8726 | 21.0 | 20.0 | 55.0 | 4.0 | 18.843 | O | 1 |
| A8727 | 20.0 | 21.0 | 55.0 | 4.0 | 18.542 | O | 1 |
| A8728 | 15.0 | 26.0 | 55.0 | 4.0 | 17.038 | O | 1 |
| A8729 | 10.0 | 31.0 | 55.0 | 4.0 | 15.533 | O | 1 |
| A8730 | 9.0 | 32.0 | 55.0 | 4.0 | 15.233 | O | 1 |
| A8731 | 8.0 | 33.0 | 55.0 | 4.0 | 14.932 | O | 1 |
| A8732 | 7.0 | 34.0 | 55.0 | 4.0 | 14.631 | O | 1 |
| A8733 | 6.0 | 35.0 | 55.0 | 4.0 | 14.330 | O | 1 |
| A8734 | 5.0 | 36.0 | 55.0 | 4.0 | 14.012 | O | 1 |
| A8735 | 4.0 | 37.0 | 55.0 | 4.0 | 13.658 | O | 1 |
| A8736 | 3.0 | 38.0 | 55.0 | 4.0 | 13.303 | O | 1 |
| A8737 | 2.0 | 39.0 | 55.0 | 4.0 | 12.948 | O | 1 |
| A8738 | 1.0 | 40.0 | 55.0 | 4.0 | 12.593 | O | 1 |
| A8739 | 0.0 | 41.0 | 55.0 | 4.0 | 12.239 | O | 1 |
| A8740 | 23.0 | 13.0 | 60.0 | 4.0 | 19.165 | X | 1 |
| A8741 | 22.5 | 13.5 | 60.0 | 4.0 | 19.014 | X | 1 |
| A8742 | 22.4 | 13.6 | 60.0 | 4.0 | 18.984 | O | 1 |
| A8743 | 22.0 | 14.0 | 60.0 | 4.0 | 18.864 | O | 1 |
| A8744 | 20.0 | 16.0 | 60.0 | 4.0 | 18.262 | O | 1 |
| A8745 | 15.0 | 21.0 | 60.0 | 4.0 | 16.758 | O | 1 |
| A8746 | 10.0 | 26.0 | 60.0 | 4.0 | 15.254 | O | 1 |
| A8747 | 9.0 | 27.0 | 60.0 | 4.0 | 14.953 | O | 1 |
| A8748 | 8.0 | 28.0 | 60.0 | 4.0 | 14.652 | O | 1 |
| A8749 | 7.0 | 29.0 | 60.0 | 4.0 | 14.351 | O | 1 |
| A8750 | 6.0 | 30.0 | 60.0 | 4.0 | 14.051 | O | 1 |
| A8751 | 5.0 | 31.0 | 60.0 | 4.0 | 13.707 | O | 1 |
| A8752 | 4.0 | 32.0 | 60.0 | 4.0 | 13.352 | O | 1 |

[Table 391]

EP 4 442 787 A1

| A8753 | 3.0 | 33.0 | 60.0 | 4.0 | 12.997 | O | 1 |
| A8754 | 2.0 | 34.0 | 60.0 | 4.0 | 12.642 | O | 1 |
| A8755 | 1.0 | 35.0 | 60.0 | 4.0 | 12.288 | O | 1 |
| A8756 | 0.0 | 36.0 | 60.0 | 4.0 | 11.933 | O | 1 |
| A8757 | 24.0 | 7.0 | 65.0 | 4.0 | 19.186 | X | 1 |
| A8758 | 23.4 | 7.6 | 65.0 | 4.0 | 19.005 | X | 1 |
| A8759 | 23.3 | 7.7 | 65.0 | 4.0 | 18.975 | O | 1 |
| A8760 | 23.0 | 8.0 | 65.0 | 4.0 | 18.885 | O | 1 |
| A8761 | 20.0 | 11.0 | 65.0 | 4.0 | 17.982 | O | 1 |
| A8762 | 15.0 | 16.0 | 65.0 | 4.0 | 16.478 | O | 1 |
| A8763 | 10.0 | 21.0 | 65.0 | 4.0 | 14.974 | O | 1 |
| A8764 | 9.0 | 22.0 | 65.0 | 4.0 | 14.673 | O | 1 |
| A8765 | 8.0 | 23.0 | 65.0 | 4.0 | 14.373 | O | 1 |
| A8766 | 7.0 | 24.0 | 65.0 | 4.0 | 14.072 | O | 1 |
| A8767 | 6.0 | 25.0 | 65.0 | 4.0 | 13.756 | O | 1 |
| A8768 | 5.0 | 26.0 | 65.0 | 4.0 | 13.401 | O | 1 |
| A8769 | 4.0 | 27.0 | 65.0 | 4.0 | 13.046 | O | 1 |
| A8770 | 3.0 | 28.0 | 65.0 | 4.0 | 12.692 | O | 1 |
| A8771 | 2.0 | 29.0 | 65.0 | 4.0 | 12.337 | O | 1 |
| A8772 | 1.0 | 30.0 | 65.0 | 4.0 | 11.982 | O | 1 |
| A8773 | 0.0 | 31.0 | 65.0 | 4.0 | 11.627 | O | 1 |
| A8774 | 25.0 | 1.0 | 70.0 | 4.0 | 19.207 | X | 1 |
| A8775 | 24.4 | 1.6 | 70.0 | 4.0 | 19.027 | X | 1 |
| A8776 | 24.3 | 1.7 | 70.0 | 4.0 | 18.996 | O | 1 |
| A8777 | 24.0 | 2.0 | 70.0 | 4.0 | 18.906 | O | 1 |
| A8778 | 20.0 | 6.0 | 70.0 | 4.0 | 17.703 | O | 1 |
| A8779 | 15.0 | 11.0 | 70.0 | 4.0 | 16.199 | O | 1 |
| A8780 | 10.0 | 16.0 | 70.0 | 4.0 | 14.695 | O | 1 |
| A8781 | 9.0 | 17.0 | 70.0 | 4.0 | 14.394 | O | 1 |
| A8782 | 8.0 | 18.0 | 70.0 | 4.0 | 14.093 | O | 1 |
| A8783 | 7.0 | 19.0 | 70.0 | 4.0 | 13.792 | O | 1 |
| A8784 | 6.0 | 20.0 | 70.0 | 4.0 | 13.450 | O | 1 |
| A8785 | 5.0 | 21.0 | 70.0 | 4.0 | 13.095 | O | 1 |
| A8786 | 4.0 | 22.0 | 70.0 | 4.0 | 12.741 | O | 1 |
| A8787 | 3.0 | 23.0 | 70.0 | 4.0 | 12.386 | O | 1 |
| A8788 | 2.0 | 24.0 | 70.0 | 4.0 | 12.031 | O | 1 |
| A8789 | 1.0 | 25.0 | 70.0 | 4.0 | 11.676 | O | 1 |
| A8790 | 0.0 | 26.0 | 70.0 | 4.0 | 11.322 | O | 1 |
| A8791 | 14.0 | 75.0 | 5.0 | 6.0 | 19.208 | X | 1 |
| A8792 | 13.4 | 75.6 | 5.0 | 6.0 | 19.028 | X | 1 |
| A8793 | 13.3 | 75.7 | 5.0 | 6.0 | 18.997 | O | 1 |
| A8794 | 13.0 | 76.0 | 5.0 | 6.0 | 18.907 | O | 1 |
| A8795 | 10.0 | 79.0 | 5.0 | 6.0 | 18.005 | O | 1 |
| A8796 | 9.0 | 80.0 | 5.0 | 6.0 | 17.704 | O | 1 |
| A8797 | 8.0 | 81.0 | 5.0 | 6.0 | 17.403 | O | 1 |
| A8798 | 7.0 | 82.0 | 5.0 | 6.0 | 17.102 | O | 1 |
| A8799 | 6.0 | 83.0 | 5.0 | 6.0 | 16.801 | O | 1 |
| A8800 | 5.0 | 84.0 | 5.0 | 6.0 | 16.501 | O | 1 |
| A8801 | 4.0 | 85.0 | 5.0 | 6.0 | 16.200 | O | 1 |
| A8802 | 3.0 | 86.0 | 5.0 | 6.0 | 15.899 | O | 1 |

[Table 392]

411

| A8803 | 2.0 | 87.0 | 5.0 | 6.0 | 15.598 | O | 1 |
|---|---|---|---|---|---|---|---|
| A8804 | 1.0 | 88.0 | 5.0 | 6.0 | 15.297 | O | 1 |
| A8805 | 0.0 | 89.0 | 5.0 | 6.0 | 14.970 | O | 1 |
| A8806 | 15.0 | 69.0 | 10.0 | 6.0 | 19.229 | X | 1 |
| A8807 | 14.3 | 69.7 | 10.0 | 6.0 | 19.019 | X | 1 |
| A8808 | 14.2 | 69.8 | 10.0 | 6.0 | 18.989 | O | 1 |
| A8809 | 14.0 | 70.0 | 10.0 | 6.0 | 18.928 | O | 1 |
| A8810 | 10.0 | 74.0 | 10.0 | 6.0 | 17.725 | O | 1 |
| A8811 | 9.0 | 75.0 | 10.0 | 6.0 | 17.424 | O | 1 |
| A8812 | 8.0 | 76.0 | 10.0 | 6.0 | 17.123 | O | 1 |
| A8813 | 7.0 | 77.0 | 10.0 | 6.0 | 16.823 | O | 1 |
| A8814 | 6.0 | 78.0 | 10.0 | 6.0 | 16.522 | O | 1 |
| A8815 | 5.0 | 79.0 | 10.0 | 6.0 | 16.221 | O | 1 |
| A8816 | 4.0 | 80.0 | 10.0 | 6.0 | 15.920 | O | 1 |
| A8817 | 3.0 | 81.0 | 10.0 | 6.0 | 15.619 | O | 1 |
| A8818 | 2.0 | 82.0 | 10.0 | 6.0 | 15.318 | O | 1 |
| A8819 | 1.0 | 83.0 | 10.0 | 6.0 | 15.018 | O | 1 |
| A8820 | 0.0 | 84.0 | 10.0 | 6.0 | 14.665 | O | 1 |
| A8821 | 16.0 | 63.0 | 15.0 | 6.0 | 19.250 | X | 1 |
| A8822 | 15.2 | 63.8 | 15.0 | 6.0 | 19.010 | X | 1 |
| A8823 | 15.1 | 63.9 | 15.0 | 6.0 | 18.980 | O | 1 |
| A8824 | 15.0 | 64.0 | 15.0 | 6.0 | 18.950 | O | 1 |
| A8825 | 10.0 | 69.0 | 15.0 | 6.0 | 17.445 | O | 1 |
| A8826 | 9.0 | 70.0 | 15.0 | 6.0 | 17.145 | O | 1 |
| A8827 | 8.0 | 71.0 | 15.0 | 6.0 | 16.844 | O | 1 |
| A8828 | 7.0 | 72.0 | 15.0 | 6.0 | 16.543 | O | 1 |
| A8829 | 6.0 | 73.0 | 15.0 | 6.0 | 16.242 | O | 1 |
| A8830 | 5.0 | 74.0 | 15.0 | 6.0 | 15.941 | O | 1 |
| A8831 | 4.0 | 75.0 | 15.0 | 6.0 | 15.640 | O | 1 |
| A8832 | 3.0 | 76.0 | 15.0 | 6.0 | 15.340 | O | 1 |
| A8833 | 2.0 | 77.0 | 15.0 | 6.0 | 15.039 | O | 1 |
| A8834 | 1.0 | 78.0 | 15.0 | 6.0 | 14.714 | O | 1 |
| A8835 | 0.0 | 79.0 | 15.0 | 6.0 | 14.359 | O | 1 |
| A8836 | 17.0 | 57.0 | 20.0 | 6.0 | 19.272 | X | 1 |
| A8837 | 16.1 | 57.9 | 20.0 | 6.0 | 19.001 | X | 1 |
| A8838 | 16.0 | 58.0 | 20.0 | 6.0 | 18.971 | O | 1 |
| A8839 | 15.0 | 59.0 | 20.0 | 6.0 | 18.670 | O | 1 |
| A8840 | 10.0 | 64.0 | 20.0 | 6.0 | 17.166 | O | 1 |
| A8841 | 9.0 | 65.0 | 20.0 | 6.0 | 16.865 | O | 1 |
| A8842 | 8.0 | 66.0 | 20.0 | 6.0 | 16.564 | O | 1 |
| A8843 | 7.0 | 67.0 | 20.0 | 6.0 | 16.263 | O | 1 |
| A8844 | 6.0 | 68.0 | 20.0 | 6.0 | 15.962 | O | 1 |
| A8845 | 5.0 | 69.0 | 20.0 | 6.0 | 15.662 | O | 1 |
| A8846 | 4.0 | 70.0 | 20.0 | 6.0 | 15.361 | O | 1 |
| A8847 | 3.0 | 71.0 | 20.0 | 6.0 | 15.060 | O | 1 |
| A8848 | 2.0 | 72.0 | 20.0 | 6.0 | 14.759 | O | 1 |
| A8849 | 1.0 | 73.0 | 20.0 | 6.0 | 14.408 | O | 1 |
| A8850 | 0.0 | 74.0 | 20.0 | 6.0 | 14.053 | O | 1 |
| A8851 | 18.0 | 51.0 | 25.0 | 6.0 | 19.293 | X | 1 |
| A8852 | 17.1 | 51.9 | 25.0 | 6.0 | 19.022 | X | 1 |

[Table 393]

412

| A8853 | 17.0 | 52.0 | 25.0 | 6.0 | 18.992 | O | 1 |
|---|---|---|---|---|---|---|---|
| A8854 | 15.0 | 54.0 | 25.0 | 6.0 | 18.390 | O | 1 |
| A8855 | 10.0 | 59.0 | 25.0 | 6.0 | 16.886 | O | 1 |
| A8856 | 9.0 | 60.0 | 25.0 | 6.0 | 16.585 | O | 1 |
| A8857 | 8.0 | 61.0 | 25.0 | 6.0 | 16.285 | O | 1 |
| A8858 | 7.0 | 62.0 | 25.0 | 6.0 | 15.984 | O | 1 |
| A8859 | 6.0 | 63.0 | 25.0 | 6.0 | 15.683 | O | 1 |
| A8860 | 5.0 | 64.0 | 25.0 | 6.0 | 15.382 | O | 1 |
| A8861 | 4.0 | 65.0 | 25.0 | 6.0 | 15.081 | O | 1 |
| A8862 | 3.0 | 66.0 | 25.0 | 6.0 | 14.780 | O | 1 |
| A8863 | 2.0 | 67.0 | 25.0 | 6.0 | 14.457 | O | 1 |
| A8864 | 1.0 | 68.0 | 25.0 | 6.0 | 14.102 | O | 1 |
| A8865 | 0.0 | 69.0 | 25.0 | 6.0 | 13.748 | O | 1 |
| A8866 | 18.0 | 46.0 | 30.0 | 6.0 | 19.013 | X | 1 |
| A8867 | 17.9 | 46.1 | 30.0 | 6.0 | 18.983 | O | 1 |
| A8868 | 17.0 | 47.0 | 30.0 | 6.0 | 18.712 | O | 1 |
| A8869 | 15.0 | 49.0 | 30.0 | 6.0 | 18.111 | O | 1 |
| A8870 | 10.0 | 54.0 | 30.0 | 6.0 | 16.607 | O | 1 |
| A8871 | 9.0 | 55.0 | 30.0 | 6.0 | 16.306 | O | 1 |
| A8872 | 8.0 | 56.0 | 30.0 | 6.0 | 16.005 | O | 1 |
| A8873 | 7.0 | 57.0 | 30.0 | 6.0 | 15.704 | O | 1 |
| A8874 | 6.0 | 58.0 | 30.0 | 6.0 | 15.403 | O | 1 |
| A8875 | 5.0 | 59.0 | 30.0 | 6.0 | 15.102 | O | 1 |
| A8876 | 4.0 | 60.0 | 30.0 | 6.0 | 14.802 | O | 1 |
| A8877 | 3.0 | 61.0 | 30.0 | 6.0 | 14.501 | O | 1 |
| A8878 | 2.0 | 62.0 | 30.0 | 6.0 | 14.151 | O | 1 |
| A8879 | 1.0 | 63.0 | 30.0 | 6.0 | 13.797 | O | 1 |
| A8880 | 0.0 | 64.0 | 30.0 | 6.0 | 13.442 | O | 1 |
| A8881 | 19.0 | 40.0 | 35.0 | 6.0 | 19.034 | X | 1 |
| A8882 | 18.9 | 40.1 | 35.0 | 6.0 | 19.004 | X | 1 |
| A8883 | 18.8 | 40.2 | 35.0 | 6.0 | 18.974 | O | 1 |
| A8884 | 18.0 | 41.0 | 35.0 | 6.0 | 18.734 | O | 1 |
| A8885 | 15.0 | 44.0 | 35.0 | 6.0 | 17.831 | O | 1 |
| A8886 | 10.0 | 49.0 | 35.0 | 6.0 | 16.327 | O | 1 |
| A8887 | 9.0 | 50.0 | 35.0 | 6.0 | 16.026 | O | 1 |
| A8888 | 8.0 | 51.0 | 35.0 | 6.0 | 15.725 | O | 1 |
| A8889 | 7.0 | 52.0 | 35.0 | 6.0 | 15.424 | O | 1 |
| A8890 | 6.0 | 53.0 | 35.0 | 6.0 | 15.124 | O | 1 |
| A8891 | 5.0 | 54.0 | 35.0 | 6.0 | 14.823 | O | 1 |
| A8892 | 4.0 | 55.0 | 35.0 | 6.0 | 14.522 | O | 1 |
| A8893 | 3.0 | 56.0 | 35.0 | 6.0 | 14.200 | O | 1 |
| A8894 | 2.0 | 57.0 | 35.0 | 6.0 | 13.846 | O | 1 |
| A8895 | 1.0 | 58.0 | 35.0 | 6.0 | 13.491 | O | 1 |
| A8896 | 0.0 | 59.0 | 35.0 | 6.0 | 13.136 | O | 1 |
| A8897 | 20.0 | 34.0 | 40.0 | 6.0 | 19.056 | X | 1 |
| A8898 | 19.9 | 34.1 | 40.0 | 6.0 | 19.026 | X | 1 |
| A8899 | 19.8 | 34.2 | 40.0 | 6.0 | 18.995 | O | 1 |
| A8900 | 19.0 | 35.0 | 40.0 | 6.0 | 18.755 | O | 1 |
| A8901 | 15.0 | 39.0 | 40.0 | 6.0 | 17.551 | O | 1 |
| A8902 | 10.0 | 44.0 | 40.0 | 6.0 | 16.047 | O | 1 |

[Table 394]

| A8903 | 9.0 | 45.0 | 40.0 | 6.0 | 15.746 | O | 1 |
|---|---|---|---|---|---|---|---|
| A8904 | 8.0 | 46.0 | 40.0 | 6.0 | 15.446 | O | 1 |
| A8905 | 7.0 | 47.0 | 40.0 | 6.0 | 15.145 | O | 1 |
| A8906 | 6.0 | 48.0 | 40.0 | 6.0 | 14.844 | O | 1 |
| A8907 | 5.0 | 49.0 | 40.0 | 6.0 | 14.543 | O | 1 |
| A8908 | 4.0 | 50.0 | 40.0 | 6.0 | 14.242 | O | 1 |
| A8909 | 3.0 | 51.0 | 40.0 | 6.0 | 13.895 | O | 1 |
| A8910 | 2.0 | 52.0 | 40.0 | 6.0 | 13.540 | O | 1 |
| A8911 | 1.0 | 53.0 | 40.0 | 6.0 | 13.185 | O | 1 |
| A8912 | 0.0 | 54.0 | 40.0 | 6.0 | 12.831 | O | 1 |
| A8913 | 21.0 | 28.0 | 45.0 | 6.0 | 19.077 | X | 1 |
| A8914 | 20.8 | 28.2 | 45.0 | 6.0 | 19.017 | X | 1 |
| A8915 | 20.7 | 28.3 | 45.0 | 6.0 | 18.987 | O | 1 |
| A8916 | 20.0 | 29.0 | 45.0 | 6.0 | 18.776 | O | 1 |
| A8917 | 15.0 | 34.0 | 45.0 | 6.0 | 17.272 | O | 1 |
| A8918 | 10.0 | 39.0 | 45.0 | 6.0 | 15.768 | O | 1 |
| A8919 | 9.0 | 40.0 | 45.0 | 6.0 | 15.467 | O | 1 |
| A8920 | 8.0 | 41.0 | 45.0 | 6.0 | 15.166 | O | 1 |
| A8921 | 7.0 | 42.0 | 45.0 | 6.0 | 14.865 | O | 1 |
| A8922 | 6.0 | 43.0 | 45.0 | 6.0 | 14.564 | O | 1 |
| A8923 | 5.0 | 44.0 | 45.0 | 6.0 | 14.264 | O | 1 |
| A8924 | 4.0 | 45.0 | 45.0 | 6.0 | 13.944 | O | 1 |
| A8925 | 3.0 | 46.0 | 45.0 | 6.0 | 13.589 | O | 1 |
| A8926 | 2.0 | 47.0 | 45.0 | 6.0 | 13.234 | O | 1 |
| A8927 | 1.0 | 48.0 | 45.0 | 6.0 | 12.880 | O | 1 |
| A8928 | 0.0 | 49.0 | 45.0 | 6.0 | 12.525 | O | 1 |
| A8929 | 22.0 | 22.0 | 50.0 | 6.0 | 19.098 | X | 1 |
| A8930 | 21.7 | 22.3 | 50.0 | 6.0 | 19.008 | X | 1 |
| A8931 | 21.6 | 22.4 | 50.0 | 6.0 | 18.978 | O | 1 |
| A8932 | 21.0 | 23.0 | 50.0 | 6.0 | 18.797 | O | 1 |
| A8933 | 20.0 | 24.0 | 50.0 | 6.0 | 18.496 | O | 1 |
| A8934 | 15.0 | 29.0 | 50.0 | 6.0 | 16.992 | O | 1 |
| A8935 | 10.0 | 34.0 | 50.0 | 6.0 | 15.488 | O | 1 |
| A8936 | 9.0 | 35.0 | 50.0 | 6.0 | 15.187 | O | 1 |
| A8937 | 8.0 | 36.0 | 50.0 | 6.0 | 14.886 | O | 1 |
| A8938 | 7.0 | 37.0 | 50.0 | 6.0 | 14.586 | O | 1 |
| A8939 | 6.0 | 38.0 | 50.0 | 6.0 | 14.285 | O | 1 |
| A8940 | 5.0 | 39.0 | 50.0 | 6.0 | 13.984 | O | 1 |
| A8941 | 4.0 | 40.0 | 50.0 | 6.0 | 13.638 | O | 1 |
| A8942 | 3.0 | 41.0 | 50.0 | 6.0 | 13.283 | O | 1 |
| A8943 | 2.0 | 42.0 | 50.0 | 6.0 | 12.929 | O | 1 |
| A8944 | 1.0 | 43.0 | 50.0 | 6.0 | 12.574 | O | 1 |
| A8945 | 0.0 | 44.0 | 50.0 | 6.0 | 12.219 | O | 1 |
| A8946 | 23.0 | 16.0 | 55.0 | 6.0 | 19.119 | X | 1 |
| A8947 | 22.7 | 16.3 | 55.0 | 6.0 | 19.029 | X | 1 |
| A8948 | 22.6 | 16.4 | 55.0 | 6.0 | 18.999 | O | 1 |
| A8949 | 22.0 | 17.0 | 55.0 | 6.0 | 18.818 | O | 1 |
| A8950 | 20.0 | 19.0 | 55.0 | 6.0 | 18.217 | O | 1 |
| A8951 | 15.0 | 24.0 | 55.0 | 6.0 | 16.713 | O | 1 |
| A8952 | 10.0 | 29.0 | 55.0 | 6.0 | 15.208 | O | 1 |

[Table 395]

| A8953 | 9.0 | 30.0 | 55.0 | 6.0 | 14.908 | O | 1 |
|---|---|---|---|---|---|---|---|
| A8954 | 8.0 | 31.0 | 55.0 | 6.0 | 14.607 | O | 1 |
| A8955 | 7.0 | 32.0 | 55.0 | 6.0 | 14.306 | O | 1 |
| A8956 | 6.0 | 33.0 | 55.0 | 6.0 | 14.005 | O | 1 |
| A8957 | 5.0 | 34.0 | 55.0 | 6.0 | 13.687 | O | 1 |
| A8958 | 4.0 | 35.0 | 55.0 | 6.0 | 13.333 | O | 1 |
| A8959 | 3.0 | 36.0 | 55.0 | 6.0 | 12.978 | O | 1 |
| A8960 | 2.0 | 37.0 | 55.0 | 6.0 | 12.623 | O | 1 |
| A8961 | 1.0 | 38.0 | 55.0 | 6.0 | 12.268 | O | 1 |
| A8962 | 0.0 | 39.0 | 55.0 | 6.0 | 11.914 | O | 1 |
| A8963 | 24.0 | 10.0 | 60.0 | 6.0 | 19.140 | X | 1 |
| A8964 | 23.6 | 10.4 | 60.0 | 6.0 | 19.020 | X | 1 |
| A8965 | 23.5 | 10.5 | 60.0 | 6.0 | 18.990 | O | 1 |
| A8966 | 23.0 | 11.0 | 60.0 | 6.0 | 18.840 | O | 1 |
| A8967 | 20.0 | 14.0 | 60.0 | 6.0 | 17.937 | O | 1 |
| A8968 | 15.0 | 19.0 | 60.0 | 6.0 | 16.433 | O | 1 |
| A8969 | 10.0 | 24.0 | 60.0 | 6.0 | 14.929 | O | 1 |
| A8970 | 9.0 | 25.0 | 60.0 | 6.0 | 14.628 | O | 1 |
| A8971 | 8.0 | 26.0 | 60.0 | 6.0 | 14.327 | O | 1 |
| A8972 | 7.0 | 27.0 | 60.0 | 6.0 | 14.026 | O | 1 |
| A8973 | 6.0 | 28.0 | 60.0 | 6.0 | 13.725 | O | 1 |
| A8974 | 5.0 | 29.0 | 60.0 | 6.0 | 13.382 | O | 1 |
| A8975 | 4.0 | 30.0 | 60.0 | 6.0 | 13.027 | O | 1 |
| A8976 | 3.0 | 31.0 | 60.0 | 6.0 | 12.672 | O | 1 |
| A8977 | 2.0 | 32.0 | 60.0 | 6.0 | 12.317 | O | 1 |
| A8978 | 1.0 | 33.0 | 60.0 | 6.0 | 11.963 | O | 1 |
| A8979 | 0.0 | 34.0 | 60.0 | 6.0 | 11.608 | O | 1 |
| A8980 | 25.0 | 4.0 | 65.0 | 6.0 | 19.162 | X | 1 |
| A8981 | 24.5 | 4.5 | 65.0 | 6.0 | 19.011 | X | 1 |
| A8982 | 24.4 | 4.6 | 65.0 | 6.0 | 18.981 | O | 1 |
| A8983 | 24.0 | 5.0 | 65.0 | 6.0 | 18.861 | O | 1 |
| A8984 | 20.0 | 9.0 | 65.0 | 6.0 | 17.657 | O | 1 |
| A8985 | 15.0 | 14.0 | 65.0 | 6.0 | 16.153 | O | 1 |
| A8986 | 10.0 | 19.0 | 65.0 | 6.0 | 14.649 | O | 1 |
| A8987 | 9.0 | 20.0 | 65.0 | 6.0 | 14.348 | O | 1 |
| A8988 | 8.0 | 21.0 | 65.0 | 6.0 | 14.048 | O | 1 |
| A8989 | 7.0 | 22.0 | 65.0 | 6.0 | 13.747 | O | 1 |
| A8990 | 6.0 | 23.0 | 65.0 | 6.0 | 13.431 | O | 1 |
| A8991 | 5.0 | 24.0 | 65.0 | 6.0 | 13.076 | O | 1 |
| A8992 | 4.0 | 25.0 | 65.0 | 6.0 | 12.721 | O | 1 |
| A8993 | 3.0 | 26.0 | 65.0 | 6.0 | 12.367 | O | 1 |
| A8994 | 2.0 | 27.0 | 65.0 | 6.0 | 12.012 | O | 1 |
| A8995 | 1.0 | 28.0 | 65.0 | 6.0 | 11.657 | O | 1 |
| A8996 | 0.0 | 29.0 | 65.0 | 6.0 | 11.302 | O | 1 |
| A8997 | 15.0 | 72.0 | 5.0 | 8.0 | 19.184 | X | 1 |
| A8998 | 14.4 | 72.6 | 5.0 | 8.0 | 19.003 | X | 1 |
| A8999 | 14.3 | 72.7 | 5.0 | 8.0 | 18.973 | O | 1 |
| A9000 | 14.0 | 73.0 | 5.0 | 8.0 | 18.883 | O | 1 |
| A9001 | 10.0 | 77.0 | 5.0 | 8.0 | 17.680 | O | 1 |
| A9002 | 9.0 | 78.0 | 5.0 | 8.0 | 17.379 | O | 1 |

[Table 396]

| A9003 | 8.0 | 79.0 | 5.0 | 8.0 | 17.078 | O | 1 |
|---|---|---|---|---|---|---|---|
| A9004 | 7.0 | 80.0 | 5.0 | 8.0 | 16.777 | O | 1 |
| A9005 | 6.0 | 81.0 | 5.0 | 8.0 | 16.476 | O | 1 |
| A9006 | 5.0 | 82.0 | 5.0 | 8.0 | 16.176 | O | 1 |
| A9007 | 4.0 | 83.0 | 5.0 | 8.0 | 15.875 | O | 1 |
| A9008 | 3.0 | 84.0 | 5.0 | 8.0 | 15.574 | O | 1 |
| A9009 | 2.0 | 85.0 | 5.0 | 8.0 | 15.273 | O | 1 |
| A9010 | 1.0 | 86.0 | 5.0 | 8.0 | 14.972 | O | 1 |
| A9011 | 0.0 | 87.0 | 5.0 | 8.0 | 14.645 | O | 1 |
| A9012 | 16.0 | 66.0 | 10.0 | 8.0 | 19.205 | X | 1 |
| A9013 | 15.4 | 66.6 | 10.0 | 8.0 | 19.025 | X | 1 |
| A9014 | 15.3 | 66.7 | 10.0 | 8.0 | 18.994 | O | 1 |
| A9015 | 15.0 | 67.0 | 10.0 | 8.0 | 18.904 | O | 1 |
| A9016 | 10.0 | 72.0 | 10.0 | 8.0 | 17.400 | O | 1 |
| A9017 | 9.0 | 73.0 | 10.0 | 8.0 | 17.099 | O | 1 |
| A9018 | 8.0 | 74.0 | 10.0 | 8.0 | 16.798 | O | 1 |
| A9019 | 7.0 | 75.0 | 10.0 | 8.0 | 16.498 | O | 1 |
| A9020 | 6.0 | 76.0 | 10.0 | 8.0 | 16.197 | O | 1 |
| A9021 | 5.0 | 77.0 | 10.0 | 8.0 | 15.896 | O | 1 |
| A9022 | 4.0 | 78.0 | 10.0 | 8.0 | 15.595 | O | 1 |
| A9023 | 3.0 | 79.0 | 10.0 | 8.0 | 15.294 | O | 1 |
| A9024 | 2.0 | 80.0 | 10.0 | 8.0 | 14.993 | O | 1 |
| A9025 | 1.0 | 81.0 | 10.0 | 8.0 | 14.693 | O | 1 |
| A9026 | 0.0 | 82.0 | 10.0 | 8.0 | 14.340 | O | 1 |
| A9027 | 17.0 | 60.0 | 15.0 | 8.0 | 19.226 | X | 1 |
| A9028 | 16.3 | 60.7 | 15.0 | 8.0 | 19.016 | X | 1 |
| A9029 | 16.2 | 60.8 | 15.0 | 8.0 | 18.986 | O | 1 |
| A9030 | 16.0 | 61.0 | 15.0 | 8.0 | 18.925 | O | 1 |
| A9031 | 15.0 | 62.0 | 15.0 | 8.0 | 18.625 | O | 1 |
| A9032 | 10.0 | 67.0 | 15.0 | 8.0 | 17.120 | O | 1 |
| A9033 | 9.0 | 68.0 | 15.0 | 8.0 | 16.820 | O | 1 |
| A9034 | 8.0 | 69.0 | 15.0 | 8.0 | 16.519 | O | 1 |
| A9035 | 7.0 | 70.0 | 15.0 | 8.0 | 16.218 | O | 1 |
| A9036 | 6.0 | 71.0 | 15.0 | 8.0 | 15.917 | O | 1 |
| A9037 | 5.0 | 72.0 | 15.0 | 8.0 | 15.616 | O | 1 |
| A9038 | 4.0 | 73.0 | 15.0 | 8.0 | 15.315 | O | 1 |
| A9039 | 3.0 | 74.0 | 15.0 | 8.0 | 15.015 | O | 1 |
| A9040 | 2.0 | 75.0 | 15.0 | 8.0 | 14.714 | O | 1 |
| A9041 | 1.0 | 76.0 | 15.0 | 8.0 | 14.389 | O | 1 |
| A9042 | 0.0 | 77.0 | 15.0 | 8.0 | 14.034 | O | 1 |
| A9043 | 18.0 | 54.0 | 20.0 | 8.0 | 19.247 | X | 1 |
| A9044 | 17.2 | 54.8 | 20.0 | 8.0 | 19.007 | X | 1 |
| A9045 | 17.1 | 54.9 | 20.0 | 8.0 | 18.977 | O | 1 |
| A9046 | 17.0 | 55.0 | 20.0 | 8.0 | 18.947 | O | 1 |
| A9047 | 15.0 | 57.0 | 20.0 | 8.0 | 18.345 | O | 1 |
| A9048 | 10.0 | 62.0 | 20.0 | 8.0 | 16.841 | O | 1 |
| A9049 | 9.0 | 63.0 | 20.0 | 8.0 | 16.540 | O | 1 |
| A9050 | 8.0 | 64.0 | 20.0 | 8.0 | 16.239 | O | 1 |
| A9051 | 7.0 | 65.0 | 20.0 | 8.0 | 15.938 | O | 1 |
| A9052 | 6.0 | 66.0 | 20.0 | 8.0 | 15.637 | O | 1 |

[Table 397]

| A9053 | 5.0 | 67.0 | 20.0 | 8.0 | 15.337 | O | 1 |
| A9054 | 4.0 | 68.0 | 20.0 | 8.0 | 15.036 | O | 1 |
| A9055 | 3.0 | 69.0 | 20.0 | 8.0 | 14.735 | O | 1 |
| A9056 | 2.0 | 70.0 | 20.0 | 8.0 | 14.434 | O | 1 |
| A9057 | 1.0 | 71.0 | 20.0 | 8.0 | 14.083 | O | 1 |
| A9058 | 0.0 | 72.0 | 20.0 | 8.0 | 13.728 | O | 1 |
| A9059 | 19.0 | 48.0 | 25.0 | 8.0 | 19.269 | X | 1 |
| A9060 | 18.2 | 48.8 | 25.0 | 8.0 | 19.028 | X | 1 |
| A9061 | 18.1 | 48.9 | 25.0 | 8.0 | 18.998 | O | 1 |
| A9062 | 18.0 | 49.0 | 25.0 | 8.0 | 18.968 | O | 1 |
| A9063 | 15.0 | 52.0 | 25.0 | 8.0 | 18.065 | O | 1 |
| A9064 | 10.0 | 57.0 | 25.0 | 8.0 | 16.561 | O | 1 |
| A9065 | 9.0 | 58.0 | 25.0 | 8.0 | 16.260 | O | 1 |
| A9066 | 8.0 | 59.0 | 25.0 | 8.0 | 15.960 | O | 1 |
| A9067 | 7.0 | 60.0 | 25.0 | 8.0 | 15.659 | O | 1 |
| A9068 | 6.0 | 61.0 | 25.0 | 8.0 | 15.358 | O | 1 |
| A9069 | 5.0 | 62.0 | 25.0 | 8.0 | 15.057 | O | 1 |
| A9070 | 4.0 | 63.0 | 25.0 | 8.0 | 14.756 | O | 1 |
| A9071 | 3.0 | 64.0 | 25.0 | 8.0 | 14.455 | O | 1 |
| A9072 | 2.0 | 65.0 | 25.0 | 8.0 | 14.132 | O | 1 |
| A9073 | 1.0 | 66.0 | 25.0 | 8.0 | 13.777 | O | 1 |
| A9074 | 0.0 | 67.0 | 25.0 | 8.0 | 13.423 | O | 1 |
| A9075 | 20.0 | 42.0 | 30.0 | 8.0 | 19.290 | X | 1 |
| A9076 | 19.1 | 42.9 | 30.0 | 8.0 | 19.019 | X | 1 |
| A9077 | 19.0 | 43.0 | 30.0 | 8.0 | 18.989 | O | 1 |
| A9078 | 15.0 | 47.0 | 30.0 | 8.0 | 17.786 | O | 1 |
| A9079 | 10.0 | 52.0 | 30.0 | 8.0 | 16.282 | O | 1 |
| A9080 | 9.0 | 53.0 | 30.0 | 8.0 | 15.981 | O | 1 |
| A9081 | 8.0 | 54.0 | 30.0 | 8.0 | 15.680 | O | 1 |
| A9082 | 7.0 | 55.0 | 30.0 | 8.0 | 15.379 | O | 1 |
| A9083 | 6.0 | 56.0 | 30.0 | 8.0 | 15.078 | O | 1 |
| A9084 | 5.0 | 57.0 | 30.0 | 8.0 | 14.777 | O | 1 |
| A9085 | 4.0 | 58.0 | 30.0 | 8.0 | 14.477 | O | 1 |
| A9086 | 3.0 | 59.0 | 30.0 | 8.0 | 14.176 | O | 1 |
| A9087 | 2.0 | 60.0 | 30.0 | 8.0 | 13.826 | O | 1 |
| A9088 | 1.0 | 61.0 | 30.0 | 8.0 | 13.472 | O | 1 |
| A9089 | 0.0 | 62.0 | 30.0 | 8.0 | 13.117 | O | 1 |
| A9090 | 20.0 | 37.0 | 35.0 | 8.0 | 19.010 | X | 1 |
| A9091 | 19.9 | 37.1 | 35.0 | 8.0 | 18.980 | O | 1 |
| A9092 | 19.0 | 38.0 | 35.0 | 8.0 | 18.709 | O | 1 |
| A9093 | 15.0 | 42.0 | 35.0 | 8.0 | 17.506 | O | 1 |
| A9094 | 10.0 | 47.0 | 35.0 | 8.0 | 16.002 | O | 1 |
| A9095 | 9.0 | 48.0 | 35.0 | 8.0 | 15.701 | O | 1 |
| A9096 | 8.0 | 49.0 | 35.0 | 8.0 | 15.400 | O | 1 |
| A9097 | 7.0 | 50.0 | 35.0 | 8.0 | 15.099 | O | 1 |
| A9098 | 6.0 | 51.0 | 35.0 | 8.0 | 14.799 | O | 1 |
| A9099 | 5.0 | 52.0 | 35.0 | 8.0 | 14.498 | O | 1 |
| A9100 | 4.0 | 53.0 | 35.0 | 8.0 | 14.197 | O | 1 |
| A9101 | 3.0 | 54.0 | 35.0 | 8.0 | 13.875 | O | 1 |
| A9102 | 2.0 | 55.0 | 35.0 | 8.0 | 13.521 | O | 1 |

[Table 398]

| A9103 | 1.0 | 56.0 | 35.0 | 8.0 | 13.166 | O | 1 |
|---|---|---|---|---|---|---|---|
| A9104 | 0.0 | 57.0 | 35.0 | 8.0 | 12.811 | O | 1 |
| A9105 | 21.0 | 31.0 | 40.0 | 8.0 | 19.031 | X | 1 |
| A9106 | 20.9 | 31.1 | 40.0 | 8.0 | 19.001 | X | 1 |
| A9107 | 20.8 | 31.2 | 40.0 | 8.0 | 18.971 | O | 1 |
| A9108 | 20.0 | 32.0 | 40.0 | 8.0 | 18.731 | O | 1 |
| A9109 | 15.0 | 37.0 | 40.0 | 8.0 | 17.226 | O | 1 |
| A9110 | 10.0 | 42.0 | 40.0 | 8.0 | 15.722 | O | 1 |
| A9111 | 9.0 | 43.0 | 40.0 | 8.0 | 15.421 | O | 1 |
| A9112 | 8.0 | 44.0 | 40.0 | 8.0 | 15.121 | O | 1 |
| A9113 | 7.0 | 45.0 | 40.0 | 8.0 | 14.820 | O | 1 |
| A9114 | 6.0 | 46.0 | 40.0 | 8.0 | 14.519 | O | 1 |
| A9115 | 5.0 | 47.0 | 40.0 | 8.0 | 14.218 | O | 1 |
| A9116 | 4.0 | 48.0 | 40.0 | 8.0 | 13.917 | O | 1 |
| A9117 | 3.0 | 49.0 | 40.0 | 8.0 | 13.570 | O | 1 |
| A9118 | 2.0 | 50.0 | 40.0 | 8.0 | 13.215 | O | 1 |
| A9119 | 1.0 | 51.0 | 40.0 | 8.0 | 12.860 | O | 1 |
| A9120 | 0.0 | 52.0 | 40.0 | 8.0 | 12.506 | O | 1 |
| A9121 | 22.0 | 25.0 | 45.0 | 8.0 | 19.053 | X | 1 |
| A9122 | 21.9 | 25.1 | 45.0 | 8.0 | 19.023 | X | 1 |
| A9123 | 21.8 | 25.2 | 45.0 | 8.0 | 18.992 | O | 1 |
| A9124 | 21.0 | 26.0 | 45.0 | 8.0 | 18.752 | O | 1 |
| A9125 | 20.0 | 27.0 | 45.0 | 8.0 | 18.451 | O | 1 |
| A9126 | 15.0 | 32.0 | 45.0 | 8.0 | 16.947 | O | 1 |
| A9127 | 10.0 | 37.0 | 45.0 | 8.0 | 15.443 | O | 1 |
| A9128 | 9.0 | 38.0 | 45.0 | 8.0 | 15.142 | O | 1 |
| A9129 | 8.0 | 39.0 | 45.0 | 8.0 | 14.841 | O | 1 |
| A9130 | 7.0 | 40.0 | 45.0 | 8.0 | 14.540 | O | 1 |
| A9131 | 6.0 | 41.0 | 45.0 | 8.0 | 14.239 | O | 1 |
| A9132 | 5.0 | 42.0 | 45.0 | 8.0 | 13.939 | O | 1 |
| A9133 | 4.0 | 43.0 | 45.0 | 8.0 | 13.619 | O | 1 |
| A9134 | 3.0 | 44.0 | 45.0 | 8.0 | 13.264 | O | 1 |
| A9135 | 2.0 | 45.0 | 45.0 | 8.0 | 12.909 | O | 1 |
| A9136 | 1.0 | 46.0 | 45.0 | 8.0 | 12.555 | O | 1 |
| A9137 | 0.0 | 47.0 | 45.0 | 8.0 | 12.200 | O | 1 |
| A9138 | 23.0 | 19.0 | 50.0 | 8.0 | 19.074 | X | 1 |
| A9139 | 22.8 | 19.2 | 50.0 | 8.0 | 19.014 | X | 1 |
| A9140 | 22.7 | 19.3 | 50.0 | 8.0 | 18.984 | O | 1 |
| A9141 | 22.0 | 20.0 | 50.0 | 8.0 | 18.773 | O | 1 |
| A9142 | 20.0 | 22.0 | 50.0 | 8.0 | 18.171 | O | 1 |
| A9143 | 15.0 | 27.0 | 50.0 | 8.0 | 16.667 | O | 1 |
| A9144 | 10.0 | 32.0 | 50.0 | 8.0 | 15.163 | O | 1 |
| A9145 | 9.0 | 33.0 | 50.0 | 8.0 | 14.862 | O | 1 |
| A9146 | 8.0 | 34.0 | 50.0 | 8.0 | 14.561 | O | 1 |
| A9147 | 7.0 | 35.0 | 50.0 | 8.0 | 14.261 | O | 1 |
| A9148 | 6.0 | 36.0 | 50.0 | 8.0 | 13.960 | O | 1 |
| A9149 | 5.0 | 37.0 | 50.0 | 8.0 | 13.659 | O | 1 |
| A9150 | 4.0 | 38.0 | 50.0 | 8.0 | 13.313 | O | 1 |
| A9151 | 3.0 | 39.0 | 50.0 | 8.0 | 12.958 | O | 1 |
| A9152 | 2.0 | 40.0 | 50.0 | 8.0 | 12.604 | O | 1 |

[Table 399]

| A9153 | 1.0 | 41.0 | 50.0 | 8.0 | 12.249 | O | 1 |
|---|---|---|---|---|---|---|---|
| A9154 | 0.0 | 42.0 | 50.0 | 8.0 | 11.894 | O | 1 |
| A9155 | 24.0 | 13.0 | 55.0 | 8.0 | 19.095 | X | 1 |
| A9156 | 23.7 | 13.3 | 55.0 | 8.0 | 19.005 | X | 1 |
| A9157 | 23.6 | 13.4 | 55.0 | 8.0 | 18.975 | O | 1 |
| A9158 | 23.0 | 14.0 | 55.0 | 8.0 | 18.794 | O | 1 |
| A9159 | 20.0 | 17.0 | 55.0 | 8.0 | 17.892 | O | 1 |
| A9160 | 15.0 | 22.0 | 55.0 | 8.0 | 16.388 | O | 1 |
| A9161 | 10.0 | 27.0 | 55.0 | 8.0 | 14.883 | O | 1 |
| A9162 | 9.0 | 28.0 | 55.0 | 8.0 | 14.583 | O | 1 |
| A9163 | 8.0 | 29.0 | 55.0 | 8.0 | 14.282 | O | 1 |
| A9164 | 7.0 | 30.0 | 55.0 | 8.0 | 13.981 | O | 1 |
| A9165 | 6.0 | 31.0 | 55.0 | 8.0 | 13.680 | O | 1 |
| A9166 | 5.0 | 32.0 | 55.0 | 8.0 | 13.362 | O | 1 |
| A9167 | 4.0 | 33.0 | 55.0 | 8.0 | 13.007 | O | 1 |
| A9168 | 3.0 | 34.0 | 55.0 | 8.0 | 12.653 | O | 1 |
| A9169 | 2.0 | 35.0 | 55.0 | 8.0 | 12.298 | O | 1 |
| A9170 | 1.0 | 36.0 | 55.0 | 8.0 | 11.943 | O | 1 |
| A9171 | 0.0 | 37.0 | 55.0 | 8.0 | 11.589 | O | 1 |
| A9172 | 25.0 | 7.0 | 60.0 | 8.0 | 19.116 | X | 1 |
| A9173 | 24.7 | 7.3 | 60.0 | 8.0 | 19.026 | X | 1 |
| A9174 | 24.6 | 7.4 | 60.0 | 8.0 | 18.996 | O | 1 |
| A9175 | 24.0 | 8.0 | 60.0 | 8.0 | 18.815 | O | 1 |
| A9176 | 20.0 | 12.0 | 60.0 | 8.0 | 17.612 | O | 1 |
| A9177 | 15.0 | 17.0 | 60.0 | 8.0 | 16.108 | O | 1 |
| A9178 | 10.0 | 22.0 | 60.0 | 8.0 | 14.604 | O | 1 |
| A9179 | 9.0 | 23.0 | 60.0 | 8.0 | 14.303 | O | 1 |
| A9180 | 8.0 | 24.0 | 60.0 | 8.0 | 14.002 | O | 1 |
| A9181 | 7.0 | 25.0 | 60.0 | 8.0 | 13.701 | O | 1 |
| A9182 | 6.0 | 26.0 | 60.0 | 8.0 | 13.400 | O | 1 |
| A9183 | 5.0 | 27.0 | 60.0 | 8.0 | 13.057 | O | 1 |
| A9184 | 4.0 | 28.0 | 60.0 | 8.0 | 12.702 | O | 1 |
| A9185 | 3.0 | 29.0 | 60.0 | 8.0 | 12.347 | O | 1 |
| A9186 | 2.0 | 30.0 | 60.0 | 8.0 | 11.992 | O | 1 |
| A9187 | 1.0 | 31.0 | 60.0 | 8.0 | 11.638 | O | 1 |
| A9188 | 0.0 | 32.0 | 60.0 | 8.0 | 11.283 | O | 1 |
| A9189 | 26.0 | 1.0 | 65.0 | 8.0 | 19.137 | X | 1 |
| A9190 | 25.6 | 1.4 | 65.0 | 8.0 | 19.017 | X | 1 |
| A9191 | 25.5 | 1.5 | 65.0 | 8.0 | 18.987 | O | 1 |
| A9192 | 25.0 | 2.0 | 65.0 | 8.0 | 18.837 | O | 1 |
| A9193 | 20.0 | 7.0 | 65.0 | 8.0 | 17.332 | O | 1 |
| A9194 | 15.0 | 12.0 | 65.0 | 8.0 | 15.828 | O | 1 |
| A9195 | 10.0 | 17.0 | 65.0 | 8.0 | 14.324 | O | 1 |
| A9196 | 9.0 | 18.0 | 65.0 | 8.0 | 14.023 | O | 1 |
| A9197 | 8.0 | 19.0 | 65.0 | 8.0 | 13.722 | O | 1 |
| A9198 | 7.0 | 20.0 | 65.0 | 8.0 | 13.422 | O | 1 |
| A9199 | 6.0 | 21.0 | 65.0 | 8.0 | 13.106 | O | 1 |
| A9200 | 5.0 | 22.0 | 65.0 | 8.0 | 12.751 | O | 1 |
| A9201 | 4.0 | 23.0 | 65.0 | 8.0 | 12.396 | O | 1 |
| A9202 | 3.0 | 24.0 | 65.0 | 8.0 | 12.041 | O | 1 |

[Table 400]

| A9203 | 2.0 | 25.0 | 65.0 | 8.0 | 11.687 | O | 1 |
|---|---|---|---|---|---|---|---|
| A9204 | 1.0 | 26.0 | 65.0 | 8.0 | 11.332 | O | 1 |
| A9205 | 0.0 | 27.0 | 65.0 | 8.0 | 10.977 | O | 1 |
| A9206 | 16.0 | 69.0 | 5.0 | 10.0 | 19.160 | X | 1 |
| A9207 | 15.5 | 69.5 | 5.0 | 10.0 | 19.009 | X | 1 |
| A9208 | 15.4 | 69.6 | 5.0 | 10.0 | 18.979 | O | 1 |
| A9209 | 15.0 | 70.0 | 5.0 | 10.0 | 18.859 | O | 1 |
| A9210 | 10.0 | 75.0 | 5.0 | 10.0 | 17.355 | O | 1 |
| A9211 | 9.0 | 76.0 | 5.0 | 10.0 | 17.054 | O | 1 |
| A9212 | 8.0 | 77.0 | 5.0 | 10.0 | 16.753 | O | 1 |
| A9213 | 7.0 | 78.0 | 5.0 | 10.0 | 16.452 | O | 1 |
| A9214 | 6.0 | 79.0 | 5.0 | 10.0 | 16.151 | O | 1 |
| A9215 | 5.0 | 80.0 | 5.0 | 10.0 | 15.851 | O | 1 |
| A9216 | 4.0 | 81.0 | 5.0 | 10.0 | 15.550 | O | 1 |
| A9217 | 3.0 | 82.0 | 5.0 | 10.0 | 15.249 | O | 1 |
| A9218 | 2.0 | 83.0 | 5.0 | 10.0 | 14.948 | O | 1 |
| A9219 | 1.0 | 84.0 | 5.0 | 10.0 | 14.647 | O | 1 |
| A9220 | 0.0 | 85.0 | 5.0 | 10.0 | 14.320 | O | 1 |
| A9221 | 17.0 | 63.0 | 10.0 | 10.0 | 19.181 | X | 1 |
| A9222 | 16.4 | 63.6 | 10.0 | 10.0 | 19.000 | X | 1 |
| A9223 | 16.3 | 63.7 | 10.0 | 10.0 | 18.970 | O | 1 |
| A9224 | 16.0 | 64.0 | 10.0 | 10.0 | 18.880 | O | 1 |
| A9225 | 15.0 | 65.0 | 10.0 | 10.0 | 18.579 | O | 1 |
| A9226 | 10.0 | 70.0 | 10.0 | 10.0 | 17.075 | O | 1 |
| A9227 | 9.0 | 71.0 | 10.0 | 10.0 | 16.774 | O | 1 |
| A9228 | 8.0 | 72.0 | 10.0 | 10.0 | 16.473 | O | 1 |
| A9229 | 7.0 | 73.0 | 10.0 | 10.0 | 16.173 | O | 1 |
| A9230 | 6.0 | 74.0 | 10.0 | 10.0 | 15.872 | O | 1 |
| A9231 | 5.0 | 75.0 | 10.0 | 10.0 | 15.571 | O | 1 |
| A9232 | 4.0 | 76.0 | 10.0 | 10.0 | 15.270 | O | 1 |
| A9233 | 3.0 | 77.0 | 10.0 | 10.0 | 14.969 | O | 1 |
| A9234 | 2.0 | 78.0 | 10.0 | 10.0 | 14.668 | O | 1 |
| A9235 | 1.0 | 79.0 | 10.0 | 10.0 | 14.368 | O | 1 |
| A9236 | 0.0 | 80.0 | 10.0 | 10.0 | 14.015 | O | 1 |
| A9237 | 18.0 | 57.0 | 15.0 | 10.0 | 19.202 | X | 1 |
| A9238 | 17.4 | 57.6 | 15.0 | 10.0 | 19.022 | X | 1 |
| A9239 | 17.3 | 57.7 | 15.0 | 10.0 | 18.991 | O | 1 |
| A9240 | 17.0 | 58.0 | 15.0 | 10.0 | 18.901 | O | 1 |
| A9241 | 15.0 | 60.0 | 15.0 | 10.0 | 18.300 | O | 1 |
| A9242 | 10.0 | 65.0 | 15.0 | 10.0 | 16.795 | O | 1 |
| A9243 | 9.0 | 66.0 | 15.0 | 10.0 | 16.495 | O | 1 |
| A9244 | 8.0 | 67.0 | 15.0 | 10.0 | 16.194 | O | 1 |
| A9245 | 7.0 | 68.0 | 15.0 | 10.0 | 15.893 | O | 1 |
| A9246 | 6.0 | 69.0 | 15.0 | 10.0 | 15.592 | O | 1 |
| A9247 | 5.0 | 70.0 | 15.0 | 10.0 | 15.291 | O | 1 |
| A9248 | 4.0 | 71.0 | 15.0 | 10.0 | 14.990 | O | 1 |
| A9249 | 3.0 | 72.0 | 15.0 | 10.0 | 14.690 | O | 1 |
| A9250 | 2.0 | 73.0 | 15.0 | 10.0 | 14.389 | O | 1 |
| A9251 | 1.0 | 74.0 | 15.0 | 10.0 | 14.064 | O | 1 |
| A9252 | 0.0 | 75.0 | 15.0 | 10.0 | 13.709 | O | 1 |

[Table 401]

| A9253 | 19.0 | 51.0 | 20.0 | 10.0 | 19.223 | X | 1 |
|---|---|---|---|---|---|---|---|
| A9254 | 18.3 | 51.7 | 20.0 | 10.0 | 19.013 | X | 1 |
| A9255 | 18.2 | 51.8 | 20.0 | 10.0 | 18.983 | O | 1 |
| A9256 | 18.0 | 52.0 | 20.0 | 10.0 | 18.922 | O | 1 |
| A9257 | 15.0 | 55.0 | 20.0 | 10.0 | 18.020 | O | 1 |
| A9258 | 10.0 | 60.0 | 20.0 | 10.0 | 16.516 | O | 1 |
| A9259 | 9.0 | 61.0 | 20.0 | 10.0 | 16.215 | O | 1 |
| A9260 | 8.0 | 62.0 | 20.0 | 10.0 | 15.914 | O | 1 |
| A9261 | 7.0 | 63.0 | 20.0 | 10.0 | 15.613 | O | 1 |
| A9262 | 6.0 | 64.0 | 20.0 | 10.0 | 15.312 | O | 1 |
| A9263 | 5.0 | 65.0 | 20.0 | 10.0 | 15.012 | O | 1 |
| A9264 | 4.0 | 66.0 | 20.0 | 10.0 | 14.711 | O | 1 |
| A9265 | 3.0 | 67.0 | 20.0 | 10.0 | 14.410 | O | 1 |
| A9266 | 2.0 | 68.0 | 20.0 | 10.0 | 14.109 | O | 1 |
| A9267 | 1.0 | 69.0 | 20.0 | 10.0 | 13.758 | O | 1 |
| A9268 | 0.0 | 70.0 | 20.0 | 10.0 | 13.403 | O | 1 |
| A9269 | 20.0 | 45.0 | 25.0 | 10.0 | 19.244 | X | 1 |
| A9270 | 19.2 | 45.8 | 25.0 | 10.0 | 19.004 | X | 1 |
| A9271 | 19.1 | 45.9 | 25.0 | 10.0 | 18.974 | O | 1 |
| A9272 | 19.0 | 46.0 | 25.0 | 10.0 | 18.944 | O | 1 |
| A9273 | 15.0 | 50.0 | 25.0 | 10.0 | 17.740 | O | 1 |
| A9274 | 10.0 | 55.0 | 25.0 | 10.0 | 16.236 | O | 1 |
| A9275 | 9.0 | 56.0 | 25.0 | 10.0 | 15.935 | O | 1 |
| A9276 | 8.0 | 57.0 | 25.0 | 10.0 | 15.634 | O | 1 |
| A9277 | 7.0 | 58.0 | 25.0 | 10.0 | 15.334 | O | 1 |
| A9278 | 6.0 | 59.0 | 25.0 | 10.0 | 15.033 | O | 1 |
| A9279 | 5.0 | 60.0 | 25.0 | 10.0 | 14.732 | O | 1 |
| A9280 | 4.0 | 61.0 | 25.0 | 10.0 | 14.431 | O | 1 |
| A9281 | 3.0 | 62.0 | 25.0 | 10.0 | 14.130 | O | 1 |
| A9282 | 2.0 | 63.0 | 25.0 | 10.0 | 13.807 | O | 1 |
| A9283 | 1.0 | 64.0 | 25.0 | 10.0 | 13.452 | O | 1 |
| A9284 | 0.0 | 65.0 | 25.0 | 10.0 | 13.098 | O | 1 |
| A9285 | 21.0 | 39.0 | 30.0 | 10.0 | 19.266 | X | 1 |
| A9286 | 20.2 | 39.8 | 30.0 | 10.0 | 19.025 | X | 1 |
| A9287 | 20.1 | 39.9 | 30.0 | 10.0 | 18.995 | O | 1 |
| A9288 | 20.0 | 40.0 | 30.0 | 10.0 | 18.965 | O | 1 |
| A9289 | 15.0 | 45.0 | 30.0 | 10.0 | 17.461 | O | 1 |
| A9290 | 10.0 | 50.0 | 30.0 | 10.0 | 15.957 | O | 1 |
| A9291 | 9.0 | 51.0 | 30.0 | 10.0 | 15.656 | O | 1 |
| A9292 | 8.0 | 52.0 | 30.0 | 10.0 | 15.355 | O | 1 |
| A9293 | 7.0 | 53.0 | 30.0 | 10.0 | 15.054 | O | 1 |
| A9294 | 6.0 | 54.0 | 30.0 | 10.0 | 14.753 | O | 1 |
| A9295 | 5.0 | 55.0 | 30.0 | 10.0 | 14.452 | O | 1 |
| A9296 | 4.0 | 56.0 | 30.0 | 10.0 | 14.152 | O | 1 |
| A9297 | 3.0 | 57.0 | 30.0 | 10.0 | 13.851 | O | 1 |
| A9298 | 2.0 | 58.0 | 30.0 | 10.0 | 13.501 | O | 1 |
| A9299 | 1.0 | 59.0 | 30.0 | 10.0 | 13.147 | O | 1 |
| A9300 | 0.0 | 60.0 | 30.0 | 10.0 | 12.792 | O | 1 |
| A9301 | 22.0 | 33.0 | 35.0 | 10.0 | 19.287 | X | 1 |
| A9302 | 21.1 | 33.9 | 35.0 | 10.0 | 19.016 | X | 1 |

[Table 402]

421

| A9303 | 21.0 | 34.0 | 35.0 | 10.0 | 18.986 | O | 1 |
|---|---|---|---|---|---|---|---|
| A9304 | 15.0 | 40.0 | 35.0 | 10.0 | 17.181 | O | 1 |
| A9305 | 10.0 | 45.0 | 35.0 | 10.0 | 15.677 | O | 1 |
| A9306 | 9.0 | 46.0 | 35.0 | 10.0 | 15.376 | O | 1 |
| A9307 | 8.0 | 47.0 | 35.0 | 10.0 | 15.075 | O | 1 |
| A9308 | 7.0 | 48.0 | 35.0 | 10.0 | 14.774 | O | 1 |
| A9309 | 6.0 | 49.0 | 35.0 | 10.0 | 14.474 | O | 1 |
| A9310 | 5.0 | 50.0 | 35.0 | 10.0 | 14.173 | O | 1 |
| A9311 | 4.0 | 51.0 | 35.0 | 10.0 | 13.872 | O | 1 |
| A9312 | 3.0 | 52.0 | 35.0 | 10.0 | 13.550 | O | 1 |
| A9313 | 2.0 | 53.0 | 35.0 | 10.0 | 13.196 | O | 1 |
| A9314 | 1.0 | 54.0 | 35.0 | 10.0 | 12.841 | O | 1 |
| A9315 | 0.0 | 55.0 | 35.0 | 10.0 | 12.486 | O | 1 |
| A9316 | 22.0 | 28.0 | 40.0 | 10.0 | 19.007 | X | 1 |
| A9317 | 21.9 | 28.1 | 40.0 | 10.0 | 18.977 | O | 1 |
| A9318 | 21.0 | 29.0 | 40.0 | 10.0 | 18.706 | O | 1 |
| A9319 | 15.0 | 35.0 | 40.0 | 10.0 | 16.901 | O | 1 |
| A9320 | 10.0 | 40.0 | 40.0 | 10.0 | 15.397 | O | 1 |
| A9321 | 9.0 | 41.0 | 40.0 | 10.0 | 15.096 | O | 1 |
| A9322 | 8.0 | 42.0 | 40.0 | 10.0 | 14.796 | O | 1 |
| A9323 | 7.0 | 43.0 | 40.0 | 10.0 | 14.495 | O | 1 |
| A9324 | 6.0 | 44.0 | 40.0 | 10.0 | 14.194 | O | 1 |
| A9325 | 5.0 | 45.0 | 40.0 | 10.0 | 13.893 | O | 1 |
| A9326 | 4.0 | 46.0 | 40.0 | 10.0 | 13.592 | O | 1 |
| A9327 | 3.0 | 47.0 | 40.0 | 10.0 | 13.245 | O | 1 |
| A9328 | 2.0 | 48.0 | 40.0 | 10.0 | 12.890 | O | 1 |
| A9329 | 1.0 | 49.0 | 40.0 | 10.0 | 12.535 | O | 1 |
| A9330 | 0.0 | 50.0 | 40.0 | 10.0 | 12.181 | O | 1 |
| A9331 | 23.0 | 22.0 | 45.0 | 10.0 | 19.028 | X | 1 |
| A9332 | 22.9 | 22.1 | 45.0 | 10.0 | 18.998 | O | 1 |
| A9333 | 22.0 | 23.0 | 45.0 | 10.0 | 18.728 | O | 1 |
| A9334 | 20.0 | 25.0 | 45.0 | 10.0 | 18.126 | O | 1 |
| A9335 | 15.0 | 30.0 | 45.0 | 10.0 | 16.622 | O | 1 |
| A9336 | 10.0 | 35.0 | 45.0 | 10.0 | 15.118 | O | 1 |
| A9337 | 9.0 | 36.0 | 45.0 | 10.0 | 14.817 | O | 1 |
| A9338 | 8.0 | 37.0 | 45.0 | 10.0 | 14.516 | O | 1 |
| A9339 | 7.0 | 38.0 | 45.0 | 10.0 | 14.215 | O | 1 |
| A9340 | 6.0 | 39.0 | 45.0 | 10.0 | 13.914 | O | 1 |
| A9341 | 5.0 | 40.0 | 45.0 | 10.0 | 13.613 | O | 1 |
| A9342 | 4.0 | 41.0 | 45.0 | 10.0 | 13.294 | O | 1 |
| A9343 | 3.0 | 42.0 | 45.0 | 10.0 | 12.939 | O | 1 |
| A9344 | 2.0 | 43.0 | 45.0 | 10.0 | 12.584 | O | 1 |
| A9345 | 1.0 | 44.0 | 45.0 | 10.0 | 12.230 | O | 1 |
| A9346 | 0.0 | 45.0 | 45.0 | 10.0 | 11.875 | O | 1 |
| A9347 | 24.0 | 16.0 | 50.0 | 10.0 | 19.050 | X | 1 |
| A9348 | 23.9 | 16.1 | 50.0 | 10.0 | 19.020 | X | 1 |
| A9349 | 23.8 | 16.2 | 50.0 | 10.0 | 18.989 | O | 1 |
| A9350 | 23.0 | 17.0 | 50.0 | 10.0 | 18.749 | O | 1 |
| A9351 | 20.0 | 20.0 | 50.0 | 10.0 | 17.846 | O | 1 |
| A9352 | 15.0 | 25.0 | 50.0 | 10.0 | 16.342 | O | 1 |

[Table 403]

| A9353 | 10.0 | 30.0 | 50.0 | 10.0 | 14.838 | O | 1 |
|---|---|---|---|---|---|---|---|
| A9354 | 9.0 | 31.0 | 50.0 | 10.0 | 14.537 | O | 1 |
| A9355 | 8.0 | 32.0 | 50.0 | 10.0 | 14.236 | O | 1 |
| A9356 | 7.0 | 33.0 | 50.0 | 10.0 | 13.936 | O | 1 |
| A9357 | 6.0 | 34.0 | 50.0 | 10.0 | 13.635 | O | 1 |
| A9358 | 5.0 | 35.0 | 50.0 | 10.0 | 13.334 | O | 1 |
| A9359 | 4.0 | 36.0 | 50.0 | 10.0 | 12.988 | O | 1 |
| A9360 | 3.0 | 37.0 | 50.0 | 10.0 | 12.633 | O | 1 |
| A9361 | 2.0 | 38.0 | 50.0 | 10.0 | 12.279 | O | 1 |
| A9362 | 1.0 | 39.0 | 50.0 | 10.0 | 11.924 | O | 1 |
| A9363 | 0.0 | 40.0 | 50.0 | 10.0 | 11.569 | O | 1 |
| A9364 | 25.0 | 10.0 | 55.0 | 10.0 | 19.071 | X | 1 |
| A9365 | 24.8 | 10.2 | 55.0 | 10.0 | 19.011 | X | 1 |
| A9366 | 24.7 | 10.3 | 55.0 | 10.0 | 18.981 | O | 1 |
| A9367 | 24.0 | 11.0 | 55.0 | 10.0 | 18.770 | O | 1 |
| A9368 | 20.0 | 15.0 | 55.0 | 10.0 | 17.567 | O | 1 |
| A9369 | 15.0 | 20.0 | 55.0 | 10.0 | 16.063 | O | 1 |
| A9370 | 10.0 | 25.0 | 55.0 | 10.0 | 14.558 | O | 1 |
| A9371 | 9.0 | 26.0 | 55.0 | 10.0 | 14.258 | O | 1 |
| A9372 | 8.0 | 27.0 | 55.0 | 10.0 | 13.957 | O | 1 |
| A9373 | 7.0 | 28.0 | 55.0 | 10.0 | 13.656 | O | 1 |
| A9374 | 6.0 | 29.0 | 55.0 | 10.0 | 13.355 | O | 1 |
| A9375 | 5.0 | 30.0 | 55.0 | 10.0 | 13.037 | O | 1 |
| A9376 | 4.0 | 31.0 | 55.0 | 10.0 | 12.682 | O | 1 |
| A9377 | 3.0 | 32.0 | 55.0 | 10.0 | 12.328 | O | 1 |
| A9378 | 2.0 | 33.0 | 55.0 | 10.0 | 11.973 | O | 1 |
| A9379 | 1.0 | 34.0 | 55.0 | 10.0 | 11.618 | O | 1 |
| A9380 | 0.0 | 35.0 | 55.0 | 10.0 | 11.264 | O | 1 |
| A9381 | 26.0 | 4.0 | 60.0 | 10.0 | 19.092 | X | 1 |
| A9382 | 25.7 | 4.3 | 60.0 | 10.0 | 19.002 | X | 1 |
| A9383 | 25.6 | 4.4 | 60.0 | 10.0 | 18.972 | O | 1 |
| A9384 | 25.0 | 5.0 | 60.0 | 10.0 | 18.791 | O | 1 |
| A9385 | 20.0 | 10.0 | 60.0 | 10.0 | 17.287 | O | 1 |
| A9386 | 15.0 | 15.0 | 60.0 | 10.0 | 15.783 | O | 1 |
| A9387 | 10.0 | 20.0 | 60.0 | 10.0 | 14.279 | O | 1 |
| A9388 | 9.0 | 21.0 | 60.0 | 10.0 | 13.978 | O | 1 |
| A9389 | 8.0 | 22.0 | 60.0 | 10.0 | 13.677 | O | 1 |
| A9390 | 7.0 | 23.0 | 60.0 | 10.0 | 13.376 | O | 1 |
| A9391 | 6.0 | 24.0 | 60.0 | 10.0 | 13.075 | O | 1 |
| A9392 | 5.0 | 25.0 | 60.0 | 10.0 | 12.732 | O | 1 |
| A9393 | 4.0 | 26.0 | 60.0 | 10.0 | 12.377 | O | 1 |
| A9394 | 3.0 | 27.0 | 60.0 | 10.0 | 12.022 | O | 1 |
| A9395 | 2.0 | 28.0 | 60.0 | 10.0 | 11.667 | O | 1 |
| A9396 | 1.0 | 29.0 | 60.0 | 10.0 | 11.313 | O | 1 |
| A9397 | 0.0 | 30.0 | 60.0 | 10.0 | 10.958 | O | 1 |

Tables 404 to 419 show the composition, combustion heat amount, and GWP of the working medium of a four-component system of propane, HFO-1132(E), HFO-1234ze(E), and $CF_3I$.

[Table 404]

| Case | propane | HFO-1132(E) | HFO-1234ze(E) | CF$_3$I | Heat of Combustion | Evaluation | GWP |
|---|---|---|---|---|---|---|---|
| A9398 | 13.0 | 77.0 | 5.0 | 5.0 | 19.136 | X | 1 |
| A9399 | 12.6 | 77.4 | 5.0 | 5.0 | 19.016 | X | 1 |
| A9400 | 12.5 | 77.5 | 5.0 | 5.0 | 18.986 | O | 1 |
| A9401 | 12.0 | 78.0 | 5.0 | 5.0 | 18.835 | O | 1 |
| A9402 | 10.0 | 80.0 | 5.0 | 5.0 | 18.234 | O | 1 |
| A9403 | 9.0 | 81.0 | 5.0 | 5.0 | 17.933 | O | 1 |
| A9404 | 8.0 | 82.0 | 5.0 | 5.0 | 17.632 | O | 1 |
| A9405 | 7.0 | 83.0 | 5.0 | 5.0 | 17.331 | O | 1 |
| A9406 | 6.0 | 84.0 | 5.0 | 5.0 | 17.030 | O | 1 |
| A9407 | 5.0 | 85.0 | 5.0 | 5.0 | 16.730 | O | 1 |
| A9408 | 4.0 | 86.0 | 5.0 | 5.0 | 16.429 | O | 1 |
| A9409 | 3.0 | 87.0 | 5.0 | 5.0 | 16.128 | O | 1 |
| A9410 | 2.0 | 88.0 | 5.0 | 5.0 | 15.827 | O | 1 |
| A9411 | 1.0 | 89.0 | 5.0 | 5.0 | 15.526 | O | 1 |
| A9412 | 0.0 | 90.0 | 5.0 | 5.0 | 15.177 | O | 1 |
| A9413 | 14.0 | 71.0 | 10.0 | 5.0 | 19.157 | X | 1 |
| A9414 | 13.5 | 71.5 | 10.0 | 5.0 | 19.007 | X | 1 |
| A9415 | 13.4 | 71.6 | 10.0 | 5.0 | 18.977 | O | 1 |
| A9416 | 13.0 | 72.0 | 10.0 | 5.0 | 18.857 | O | 1 |
| A9417 | 10.0 | 75.0 | 10.0 | 5.0 | 17.954 | O | 1 |
| A9418 | 9.0 | 76.0 | 10.0 | 5.0 | 17.653 | O | 1 |
| A9419 | 8.0 | 77.0 | 10.0 | 5.0 | 17.352 | O | 1 |
| A9420 | 7.0 | 78.0 | 10.0 | 5.0 | 17.052 | O | 1 |
| A9421 | 6.0 | 79.0 | 10.0 | 5.0 | 16.751 | O | 1 |
| A9422 | 5.0 | 80.0 | 10.0 | 5.0 | 16.450 | O | 1 |
| A9423 | 4.0 | 81.0 | 10.0 | 5.0 | 16.149 | O | 1 |
| A9424 | 3.0 | 82.0 | 10.0 | 5.0 | 15.848 | O | 1 |
| A9425 | 2.0 | 83.0 | 10.0 | 5.0 | 15.547 | O | 1 |
| A9426 | 1.0 | 84.0 | 10.0 | 5.0 | 15.226 | O | 1 |
| A9427 | 0.0 | 85.0 | 10.0 | 5.0 | 14.871 | O | 1 |
| A9428 | 15.0 | 65.0 | 15.0 | 5.0 | 19.179 | X | 1 |
| A9429 | 14.5 | 65.5 | 15.0 | 5.0 | 19.028 | X | 1 |
| A9430 | 14.4 | 65.6 | 15.0 | 5.0 | 18.998 | O | 1 |
| A9431 | 14.0 | 66.0 | 15.0 | 5.0 | 18.878 | O | 1 |
| A9432 | 10.0 | 70.0 | 15.0 | 5.0 | 17.675 | O | 1 |
| A9433 | 9.0 | 71.0 | 15.0 | 5.0 | 17.374 | O | 1 |
| A9434 | 8.0 | 72.0 | 15.0 | 5.0 | 17.073 | O | 1 |
| A9435 | 7.0 | 73.0 | 15.0 | 5.0 | 16.772 | O | 1 |
| A9436 | 6.0 | 74.0 | 15.0 | 5.0 | 16.471 | O | 1 |
| A9437 | 5.0 | 75.0 | 15.0 | 5.0 | 16.170 | O | 1 |
| A9438 | 4.0 | 76.0 | 15.0 | 5.0 | 15.870 | O | 1 |
| A9439 | 3.0 | 77.0 | 15.0 | 5.0 | 15.569 | O | 1 |
| A9440 | 2.0 | 78.0 | 15.0 | 5.0 | 15.268 | O | 1 |
| A9441 | 1.0 | 79.0 | 15.0 | 5.0 | 14.920 | O | 1 |
| A9442 | 0.0 | 80.0 | 15.0 | 5.0 | 14.565 | O | 1 |
| A9443 | 16.0 | 59.0 | 20.0 | 5.0 | 19.200 | X | 1 |
| A9444 | 15.4 | 59.6 | 20.0 | 5.0 | 19.019 | X | 1 |
| A9445 | 15.3 | 59.7 | 20.0 | 5.0 | 18.989 | O | 1 |
| A9446 | 15.0 | 60.0 | 20.0 | 5.0 | 18.899 | O | 1 |
| A9447 | 10.0 | 65.0 | 20.0 | 5.0 | 17.395 | O | 1 |

[Table 405]

424

| | | | | | | | |
|---|---|---|---|---|---|---|---|
| A9448 | 9.0 | 66.0 | 20.0 | 5.0 | 17.094 | O | 1 |
| A9449 | 8.0 | 67.0 | 20.0 | 5.0 | 16.793 | O | 1 |
| A9450 | 7.0 | 68.0 | 20.0 | 5.0 | 16.492 | O | 1 |
| A9451 | 6.0 | 69.0 | 20.0 | 5.0 | 16.192 | O | 1 |
| A9452 | 5.0 | 70.0 | 20.0 | 5.0 | 15.891 | O | 1 |
| A9453 | 4.0 | 71.0 | 20.0 | 5.0 | 15.590 | O | 1 |
| A9454 | 3.0 | 72.0 | 20.0 | 5.0 | 15.289 | O | 1 |
| A9455 | 2.0 | 73.0 | 20.0 | 5.0 | 14.969 | O | 1 |
| A9456 | 1.0 | 74.0 | 20.0 | 5.0 | 14.614 | O | 1 |
| A9457 | 0.0 | 75.0 | 20.0 | 5.0 | 14.260 | O | 1 |
| A9458 | 17.0 | 53.0 | 25.0 | 5.0 | 19.221 | X | 1 |
| A9459 | 16.3 | 53.7 | 25.0 | 5.0 | 19.010 | X | 1 |
| A9460 | 16.2 | 53.8 | 25.0 | 5.0 | 18.980 | O | 1 |
| A9461 | 16.0 | 54.0 | 25.0 | 5.0 | 18.920 | O | 1 |
| A9462 | 15.0 | 55.0 | 25.0 | 5.0 | 18.619 | O | 1 |
| A9463 | 10.0 | 60.0 | 25.0 | 5.0 | 17.115 | O | 1 |
| A9464 | 9.0 | 61.0 | 25.0 | 5.0 | 16.814 | O | 1 |
| A9465 | 8.0 | 62.0 | 25.0 | 5.0 | 16.514 | O | 1 |
| A9466 | 7.0 | 63.0 | 25.0 | 5.0 | 16.213 | O | 1 |
| A9467 | 6.0 | 64.0 | 25.0 | 5.0 | 15.912 | O | 1 |
| A9468 | 5.0 | 65.0 | 25.0 | 5.0 | 15.611 | O | 1 |
| A9469 | 4.0 | 66.0 | 25.0 | 5.0 | 15.310 | O | 1 |
| A9470 | 3.0 | 67.0 | 25.0 | 5.0 | 15.009 | O | 1 |
| A9471 | 2.0 | 68.0 | 25.0 | 5.0 | 14.663 | O | 1 |
| A9472 | 1.0 | 69.0 | 25.0 | 5.0 | 14.309 | O | 1 |
| A9473 | 0.0 | 70.0 | 25.0 | 5.0 | 13.954 | O | 1 |
| A9474 | 18.0 | 47.0 | 30.0 | 5.0 | 19.242 | X | 1 |
| A9475 | 17.2 | 47.8 | 30.0 | 5.0 | 19.002 | X | 1 |
| A9476 | 17.1 | 47.9 | 30.0 | 5.0 | 18.972 | O | 1 |
| A9477 | 17.0 | 48.0 | 30.0 | 5.0 | 18.941 | O | 1 |
| A9478 | 15.0 | 50.0 | 30.0 | 5.0 | 18.340 | O | 1 |
| A9479 | 10.0 | 55.0 | 30.0 | 5.0 | 16.836 | O | 1 |
| A9480 | 9.0 | 56.0 | 30.0 | 5.0 | 16.535 | O | 1 |
| A9481 | 8.0 | 57.0 | 30.0 | 5.0 | 16.234 | O | 1 |
| A9482 | 7.0 | 58.0 | 30.0 | 5.0 | 15.933 | O | 1 |
| A9483 | 6.0 | 59.0 | 30.0 | 5.0 | 15.632 | O | 1 |
| A9484 | 5.0 | 60.0 | 30.0 | 5.0 | 15.331 | O | 1 |
| A9485 | 4.0 | 61.0 | 30.0 | 5.0 | 15.031 | O | 1 |
| A9486 | 3.0 | 62.0 | 30.0 | 5.0 | 14.712 | O | 1 |
| A9487 | 2.0 | 63.0 | 30.0 | 5.0 | 14.358 | O | 1 |
| A9488 | 1.0 | 64.0 | 30.0 | 5.0 | 14.003 | O | 1 |
| A9489 | 0.0 | 65.0 | 30.0 | 5.0 | 13.648 | O | 1 |
| A9490 | 19.0 | 41.0 | 35.0 | 5.0 | 19.263 | X | 1 |
| A9491 | 18.2 | 41.8 | 35.0 | 5.0 | 19.023 | X | 1 |
| A9492 | 18.1 | 41.9 | 35.0 | 5.0 | 18.993 | O | 1 |
| A9493 | 18.0 | 42.0 | 35.0 | 5.0 | 18.963 | O | 1 |
| A9494 | 15.0 | 45.0 | 35.0 | 5.0 | 18.060 | O | 1 |
| A9495 | 10.0 | 50.0 | 35.0 | 5.0 | 16.556 | O | 1 |
| A9496 | 9.0 | 51.0 | 35.0 | 5.0 | 16.255 | O | 1 |
| A9497 | 8.0 | 52.0 | 35.0 | 5.0 | 15.954 | O | 1 |

[Table 406]

| A9498 | 7.0 | 53.0 | 35.0 | 5.0 | 15.653 | O | 1 |
|---|---|---|---|---|---|---|---|
| A9499 | 6.0 | 54.0 | 35.0 | 5.0 | 15.353 | O | 1 |
| A9500 | 5.0 | 55.0 | 35.0 | 5.0 | 15.052 | O | 1 |
| A9501 | 4.0 | 56.0 | 35.0 | 5.0 | 14.751 | O | 1 |
| A9502 | 3.0 | 57.0 | 35.0 | 5.0 | 14.407 | O | 1 |
| A9503 | 2.0 | 58.0 | 35.0 | 5.0 | 14.052 | O | 1 |
| A9504 | 1.0 | 59.0 | 35.0 | 5.0 | 13.697 | O | 1 |
| A9505 | 0.0 | 60.0 | 35.0 | 5.0 | 13.343 | O | 1 |
| A9506 | 20.0 | 35.0 | 40.0 | 5.0 | 19.285 | X | 1 |
| A9507 | 19.1 | 35.9 | 40.0 | 5.0 | 19.014 | X | 1 |
| A9508 | 19.0 | 36.0 | 40.0 | 5.0 | 18.984 | O | 1 |
| A9509 | 15.0 | 40.0 | 40.0 | 5.0 | 17.781 | O | 1 |
| A9510 | 10.0 | 45.0 | 40.0 | 5.0 | 16.276 | O | 1 |
| A9511 | 9.0 | 46.0 | 40.0 | 5.0 | 15.976 | O | 1 |
| A9512 | 8.0 | 47.0 | 40.0 | 5.0 | 15.675 | O | 1 |
| A9513 | 7.0 | 48.0 | 40.0 | 5.0 | 15.374 | O | 1 |
| A9514 | 6.0 | 49.0 | 40.0 | 5.0 | 15.073 | O | 1 |
| A9515 | 5.0 | 50.0 | 40.0 | 5.0 | 14.772 | O | 1 |
| A9516 | 4.0 | 51.0 | 40.0 | 5.0 | 14.456 | O | 1 |
| A9517 | 3.0 | 52.0 | 40.0 | 5.0 | 14.101 | O | 1 |
| A9518 | 2.0 | 53.0 | 40.0 | 5.0 | 13.746 | O | 1 |
| A9519 | 1.0 | 54.0 | 40.0 | 5.0 | 13.392 | O | 1 |
| A9520 | 0.0 | 55.0 | 40.0 | 5.0 | 13.037 | O | 1 |
| A9521 | 20.0 | 30.0 | 45.0 | 5.0 | 19.005 | X | 1 |
| A9522 | 19.9 | 30.1 | 45.0 | 5.0 | 18.975 | O | 1 |
| A9523 | 19.0 | 31.0 | 45.0 | 5.0 | 18.704 | O | 1 |
| A9524 | 15.0 | 35.0 | 45.0 | 5.0 | 17.501 | O | 1 |
| A9525 | 10.0 | 40.0 | 45.0 | 5.0 | 15.997 | O | 1 |
| A9526 | 9.0 | 41.0 | 45.0 | 5.0 | 15.696 | O | 1 |
| A9527 | 8.0 | 42.0 | 45.0 | 5.0 | 15.395 | O | 1 |
| A9528 | 7.0 | 43.0 | 45.0 | 5.0 | 15.094 | O | 1 |
| A9529 | 6.0 | 44.0 | 45.0 | 5.0 | 14.793 | O | 1 |
| A9530 | 5.0 | 45.0 | 45.0 | 5.0 | 14.493 | O | 1 |
| A9531 | 4.0 | 46.0 | 45.0 | 5.0 | 14.150 | O | 1 |
| A9532 | 3.0 | 47.0 | 45.0 | 5.0 | 13.795 | O | 1 |
| A9533 | 2.0 | 48.0 | 45.0 | 5.0 | 13.441 | O | 1 |
| A9534 | 1.0 | 49.0 | 45.0 | 5.0 | 13.086 | O | 1 |
| A9535 | 0.0 | 50.0 | 45.0 | 5.0 | 12.731 | O | 1 |
| A9536 | 21.0 | 24.0 | 50.0 | 5.0 | 19.026 | X | 1 |
| A9537 | 20.9 | 24.1 | 50.0 | 5.0 | 18.996 | O | 1 |
| A9538 | 20.0 | 25.0 | 50.0 | 5.0 | 18.725 | O | 1 |
| A9539 | 15.0 | 30.0 | 50.0 | 5.0 | 17.221 | O | 1 |
| A9540 | 10.0 | 35.0 | 50.0 | 5.0 | 15.717 | O | 1 |
| A9541 | 9.0 | 36.0 | 50.0 | 5.0 | 15.416 | O | 1 |
| A9542 | 8.0 | 37.0 | 50.0 | 5.0 | 15.115 | O | 1 |
| A9543 | 7.0 | 38.0 | 50.0 | 5.0 | 14.815 | O | 1 |
| A9544 | 6.0 | 39.0 | 50.0 | 5.0 | 14.514 | O | 1 |
| A9545 | 5.0 | 40.0 | 50.0 | 5.0 | 14.199 | O | 1 |
| A9546 | 4.0 | 41.0 | 50.0 | 5.0 | 13.845 | O | 1 |
| A9547 | 3.0 | 42.0 | 50.0 | 5.0 | 13.490 | O | 1 |

[Table 407]

| A9548 | 2.0 | 43.0 | 50.0 | 5.0 | 13.135 | O | 1 |
|---|---|---|---|---|---|---|---|
| A9549 | 1.0 | 44.0 | 50.0 | 5.0 | 12.780 | O | 1 |
| A9550 | 0.0 | 45.0 | 50.0 | 5.0 | 12.426 | O | 1 |
| A9551 | 22.0 | 18.0 | 55.0 | 5.0 | 19.047 | X | 1 |
| A9552 | 21.9 | 18.1 | 55.0 | 5.0 | 19.017 | X | 1 |
| A9553 | 21.8 | 18.2 | 55.0 | 5.0 | 18.987 | O | 1 |
| A9554 | 21.0 | 19.0 | 55.0 | 5.0 | 18.747 | O | 1 |
| A9555 | 20.0 | 20.0 | 55.0 | 5.0 | 18.446 | O | 1 |
| A9556 | 15.0 | 25.0 | 55.0 | 5.0 | 16.942 | O | 1 |
| A9557 | 10.0 | 30.0 | 55.0 | 5.0 | 15.437 | O | 1 |
| A9558 | 9.0 | 31.0 | 55.0 | 5.0 | 15.137 | O | 1 |
| A9559 | 8.0 | 32.0 | 55.0 | 5.0 | 14.836 | O | 1 |
| A9560 | 7.0 | 33.0 | 55.0 | 5.0 | 14.535 | O | 1 |
| A9561 | 6.0 | 34.0 | 55.0 | 5.0 | 14.234 | O | 1 |
| A9562 | 5.0 | 35.0 | 55.0 | 5.0 | 13.894 | O | 1 |
| A9563 | 4.0 | 36.0 | 55.0 | 5.0 | 13.539 | O | 1 |
| A9564 | 3.0 | 37.0 | 55.0 | 5.0 | 13.184 | O | 1 |
| A9565 | 2.0 | 38.0 | 55.0 | 5.0 | 12.829 | O | 1 |
| A9566 | 1.0 | 39.0 | 55.0 | 5.0 | 12.475 | O | 1 |
| A9567 | 0.0 | 40.0 | 55.0 | 5.0 | 12.120 | O | 1 |
| A9568 | 23.0 | 12.0 | 60.0 | 5.0 | 19.069 | X | 1 |
| A9569 | 22.8 | 12.2 | 60.0 | 5.0 | 19.008 | X | 1 |
| A9570 | 22.7 | 12.3 | 60.0 | 5.0 | 18.978 | O | 1 |
| A9571 | 22.0 | 13.0 | 60.0 | 5.0 | 18.768 | O | 1 |
| A9572 | 20.0 | 15.0 | 60.0 | 5.0 | 18.166 | O | 1 |
| A9573 | 15.0 | 20.0 | 60.0 | 5.0 | 16.662 | O | 1 |
| A9574 | 10.0 | 25.0 | 60.0 | 5.0 | 15.158 | O | 1 |
| A9575 | 9.0 | 26.0 | 60.0 | 5.0 | 14.857 | O | 1 |
| A9576 | 8.0 | 27.0 | 60.0 | 5.0 | 14.556 | O | 1 |
| A9577 | 7.0 | 28.0 | 60.0 | 5.0 | 14.255 | O | 1 |
| A9578 | 6.0 | 29.0 | 60.0 | 5.0 | 13.943 | O | 1 |
| A9579 | 5.0 | 30.0 | 60.0 | 5.0 | 13.588 | O | 1 |
| A9580 | 4.0 | 31.0 | 60.0 | 5.0 | 13.233 | O | 1 |
| A9581 | 3.0 | 32.0 | 60.0 | 5.0 | 12.878 | O | 1 |
| A9582 | 2.0 | 33.0 | 60.0 | 5.0 | 12.524 | O | 1 |
| A9583 | 1.0 | 34.0 | 60.0 | 5.0 | 12.169 | O | 1 |
| A9584 | 0.0 | 35.0 | 60.0 | 5.0 | 11.814 | O | 1 |
| A9585 | 24.0 | 6.0 | 65.0 | 5.0 | 19.090 | X | 1 |
| A9586 | 23.7 | 6.3 | 65.0 | 5.0 | 19.000 | **X** | 1 |
| A9587 | 23.6 | 6.4 | 65.0 | 5.0 | 18.970 | O | 1 |
| A9588 | 23.0 | 7.0 | 65.0 | 5.0 | 18.789 | O | 1 |
| A9589 | 20.0 | 10.0 | 65.0 | 5.0 | 17.887 | O | 1 |
| A9590 | 15.0 | 15.0 | 65.0 | 5.0 | 16.382 | O | 1 |
| A9591 | 10.0 | 20.0 | 65.0 | 5.0 | 14.878 | O | 1 |
| A9592 | 9.0 | 21.0 | 65.0 | 5.0 | 14.577 | O | 1 |
| A9593 | 8.0 | 22.0 | 65.0 | 5.0 | 14.277 | O | 1 |
| A9594 | 7.0 | 23.0 | 65.0 | 5.0 | 13.976 | O | 1 |
| A9595 | 6.0 | 24.0 | 65.0 | 5.0 | 13.637 | O | 1 |
| A9596 | 5.0 | 25.0 | 65.0 | 5.0 | 13.282 | O | 1 |
| A9597 | 4.0 | 26.0 | 65.0 | 5.0 | 12.928 | O | 1 |

[Table 408]

| | | | | | | | |
|---|---|---|---|---|---|---|---|
| A9598 | 3.0 | 27.0 | 65.0 | 5.0 | 12.573 | O | 1 |
| A9599 | 2.0 | 28.0 | 65.0 | 5.0 | 12.218 | O | 1 |
| A9600 | 1.0 | 29.0 | 65.0 | 5.0 | 11.863 | O | 1 |
| A9601 | 0.0 | 30.0 | 65.0 | 5.0 | 11.509 | O | 1 |
| A9602 | 16.0 | 69.0 | 5.0 | 10.0 | 19.293 | X | 1 |
| A9603 | 15.1 | 69.9 | 5.0 | 10.0 | 19.022 | X | 1 |
| A9604 | 15.0 | 70.0 | 5.0 | 10.0 | 18.992 | O | 1 |
| A9605 | 10.0 | 75.0 | 5.0 | 10.0 | 17.488 | O | 1 |
| A9606 | 9.0 | 76.0 | 5.0 | 10.0 | 17.187 | O | 1 |
| A9607 | 8.0 | 77.0 | 5.0 | 10.0 | 16.886 | O | 1 |
| A9608 | 7.0 | 78.0 | 5.0 | 10.0 | 16.585 | O | 1 |
| A9609 | 6.0 | 79.0 | 5.0 | 10.0 | 16.284 | O | 1 |
| A9610 | 5.0 | 80.0 | 5.0 | 10.0 | 15.984 | O | 1 |
| A9611 | 4.0 | 81.0 | 5.0 | 10.0 | 15.683 | O | 1 |
| A9612 | 3.0 | 82.0 | 5.0 | 10.0 | 15.382 | O | 1 |
| A9613 | 2.0 | 83.0 | 5.0 | 10.0 | 15.081 | O | 1 |
| A9614 | 1.0 | 84.0 | 5.0 | 10.0 | 14.763 | O | 1 |
| A9615 | 0.0 | 85.0 | 5.0 | 10.0 | 14.408 | O | 1 |
| A9616 | 16.0 | 64.0 | 10.0 | 10.0 | 19.013 | X | 1 |
| A9617 | 15.9 | 64.1 | 10.0 | 10.0 | 18.983 | O | 1 |
| A9618 | 15.0 | 65.0 | 10.0 | 10.0 | 18.712 | O | 1 |
| A9619 | 10.0 | 70.0 | 10.0 | 10.0 | 17.208 | O | 1 |
| A9620 | 9.0 | 71.0 | 10.0 | 10.0 | 16.907 | O | 1 |
| A9621 | 8.0 | 72.0 | 10.0 | 10.0 | 16.606 | O | 1 |
| A9622 | 7.0 | 73.0 | 10.0 | 10.0 | 16.306 | O | 1 |
| A9623 | 6.0 | 74.0 | 10.0 | 10.0 | 16.005 | O | 1 |
| A9624 | 5.0 | 75.0 | 10.0 | 10.0 | 15.704 | O | 1 |
| A9625 | 4.0 | 76.0 | 10.0 | 10.0 | 15.403 | O | 1 |
| A9626 | 3.0 | 77.0 | 10.0 | 10.0 | 15.102 | O | 1 |
| A9627 | 2.0 | 78.0 | 10.0 | 10.0 | 14.801 | O | 1 |
| A9628 | 1.0 | 79.0 | 10.0 | 10.0 | 14.457 | O | 1 |
| A9629 | 0.0 | 80.0 | 10.0 | 10.0 | 14.102 | O | 1 |
| A9630 | 17.0 | 58.0 | 15.0 | 10.0 | 19.034 | X | 1 |
| A9631 | 16.9 | 58.1 | 15.0 | 10.0 | 19.004 | X | 1 |
| A9632 | 16.8 | 58.2 | 15.0 | 10.0 | 18.974 | O | 1 |
| A9633 | 16.0 | 59.0 | 15.0 | 10.0 | 18.733 | O | 1 |
| A9634 | 15.0 | 60.0 | 15.0 | 10.0 | 18.433 | O | 1 |
| A9635 | 10.0 | 65.0 | 15.0 | 10.0 | 16.928 | O | 1 |
| A9636 | 9.0 | 66.0 | 15.0 | 10.0 | 16.628 | O | 1 |
| A9637 | 8.0 | 67.0 | 15.0 | 10.0 | 16.327 | O | 1 |
| A9638 | 7.0 | 68.0 | 15.0 | 10.0 | 16.026 | O | 1 |
| A9639 | 6.0 | 69.0 | 15.0 | 10.0 | 15.725 | O | 1 |
| A9640 | 5.0 | 70.0 | 15.0 | 10.0 | 15.424 | O | 1 |
| A9641 | 4.0 | 71.0 | 15.0 | 10.0 | 15.124 | O | 1 |
| A9642 | 3.0 | 72.0 | 15.0 | 10.0 | 14.823 | O | 1 |
| A9643 | 2.0 | 73.0 | 15.0 | 10.0 | 14.506 | O | 1 |
| A9644 | 1.0 | 74.0 | 15.0 | 10.0 | 14.151 | O | 1 |
| A9645 | 0.0 | 75.0 | 15.0 | 10.0 | 13.797 | O | 1 |
| A9646 | 18.0 | 52.0 | 20.0 | 10.0 | 19.056 | X | 1 |
| A9647 | 17.9 | 52.1 | 20.0 | 10.0 | 19.025 | X | 1 |

[Table 409]

| | | | | | | | |
|---|---|---|---|---|---|---|---|
| A9648 | 17.8 | 52.2 | 20.0 | 10.0 | 18.995 | O | 1 |
| A9649 | 17.0 | 53.0 | 20.0 | 10.0 | 18.755 | O | 1 |
| A9650 | 15.0 | 55.0 | 20.0 | 10.0 | 18.153 | O | 1 |
| A9651 | 10.0 | 60.0 | 20.0 | 10.0 | 16.649 | O | 1 |
| A9652 | 9.0 | 61.0 | 20.0 | 10.0 | 16.348 | O | 1 |
| A9653 | 8.0 | 62.0 | 20.0 | 10.0 | 16.047 | O | 1 |
| A9654 | 7.0 | 63.0 | 20.0 | 10.0 | 15.746 | O | 1 |
| A9655 | 6.0 | 64.0 | 20.0 | 10.0 | 15.446 | O | 1 |
| A9656 | 5.0 | 65.0 | 20.0 | 10.0 | 15.145 | O | 1 |
| A9657 | 4.0 | 66.0 | 20.0 | 10.0 | 14.844 | O | 1 |
| A9658 | 3.0 | 67.0 | 20.0 | 10.0 | 14.543 | O | 1 |
| A9659 | 2.0 | 68.0 | 20.0 | 10.0 | 14.200 | O | 1 |
| A9660 | 1.0 | 69.0 | 20.0 | 10.0 | 13.846 | O | 1 |
| A9661 | 0.0 | 70.0 | 20.0 | 10.0 | 13.491 | O | 1 |
| A9662 | 19.0 | 46.0 | 25.0 | 10.0 | 19.077 | X | 1 |
| A9663 | 18.8 | 46.2 | 25.0 | 10.0 | 19.017 | X | 1 |
| A9664 | 18.7 | 46.3 | 25.0 | 10.0 | 18.986 | O | 1 |
| A9665 | 18.0 | 47.0 | 25.0 | 10.0 | 18.776 | O | 1 |
| A9666 | 15.0 | 50.0 | 25.0 | 10.0 | 17.873 | O | 1 |
| A9667 | 10.0 | 55.0 | 25.0 | 10.0 | 16.369 | O | 1 |
| A9668 | 9.0 | 56.0 | 25.0 | 10.0 | 16.068 | O | 1 |
| A9669 | 8.0 | 57.0 | 25.0 | 10.0 | 15.768 | O | 1 |
| A9670 | 7.0 | 58.0 | 25.0 | 10.0 | 15.467 | O | 1 |
| A9671 | 6.0 | 59.0 | 25.0 | 10.0 | 15.166 | O | 1 |
| A9672 | 5.0 | 60.0 | 25.0 | 10.0 | 14.865 | O | 1 |
| A9673 | 4.0 | 61.0 | 25.0 | 10.0 | 14.564 | O | 1 |
| A9674 | 3.0 | 62.0 | 25.0 | 10.0 | 14.249 | O | 1 |
| A9675 | 2.0 | 63.0 | 25.0 | 10.0 | 13.895 | O | 1 |
| A9676 | 1.0 | 64.0 | 25.0 | 10.0 | 13.540 | O | 1 |
| A9677 | 0.0 | 65.0 | 25.0 | 10.0 | 13.185 | O | 1 |
| A9678 | 20.0 | 40.0 | 30.0 | 10.0 | 19.098 | X | 1 |
| A9679 | 19.7 | 40.3 | 30.0 | 10.0 | 19.008 | X | 1 |
| A9680 | 19.6 | 40.4 | 30.0 | 10.0 | 18.978 | O | 1 |
| A9681 | 19.0 | 41.0 | 30.0 | 10.0 | 18.797 | O | 1 |
| A9682 | 15.0 | 45.0 | 30.0 | 10.0 | 17.594 | O | 1 |
| A9683 | 10.0 | 50.0 | 30.0 | 10.0 | 16.090 | O | 1 |
| A9684 | 9.0 | 51.0 | 30.0 | 10.0 | 15.789 | O | 1 |
| A9685 | 8.0 | 52.0 | 30.0 | 10.0 | 15.488 | O | 1 |
| A9686 | 7.0 | 53.0 | 30.0 | 10.0 | 15.187 | O | 1 |
| A9687 | 6.0 | 54.0 | 30.0 | 10.0 | 14.886 | O | 1 |
| A9688 | 5.0 | 55.0 | 30.0 | 10.0 | 14.585 | O | 1 |
| A9689 | 4.0 | 56.0 | 30.0 | 10.0 | 14.285 | O | 1 |
| A9690 | 3.0 | 57.0 | 30.0 | 10.0 | 13.944 | O | 1 |
| A9691 | 2.0 | 58.0 | 30.0 | 10.0 | 13.589 | O | 1 |
| A9692 | 1.0 | 59.0 | 30.0 | 10.0 | 13.234 | O | 1 |
| A9693 | 0.0 | 60.0 | 30.0 | 10.0 | 12.880 | O | 1 |
| A9694 | 21.0 | 34.0 | 35.0 | 10.0 | 19.119 | X | 1 |
| A9695 | 20.7 | 34.3 | 35.0 | 10.0 | 19.029 | X | 1 |
| A9696 | 20.6 | 34.4 | 35.0 | 10.0 | 18.999 | O | 1 |
| A9697 | 20.0 | 35.0 | 35.0 | 10.0 | 18.818 | O | 1 |

[Table 410]

| A9698 | 15.0 | 40.0 | 35.0 | 10.0 | 17.314 | O | 1 |
|---|---|---|---|---|---|---|---|
| A9699 | 10.0 | 45.0 | 35.0 | 10.0 | 15.810 | O | 1 |
| A9700 | 9.0 | 46.0 | 35.0 | 10.0 | 15.509 | O | 1 |
| A9701 | 8.0 | 47.0 | 35.0 | 10.0 | 15.208 | O | 1 |
| A9702 | 7.0 | 48.0 | 35.0 | 10.0 | 14.907 | O | 1 |
| A9703 | 6.0 | 49.0 | 35.0 | 10.0 | 14.607 | O | 1 |
| A9704 | 5.0 | 50.0 | 35.0 | 10.0 | 14.306 | O | 1 |
| A9705 | 4.0 | 51.0 | 35.0 | 10.0 | 13.993 | O | 1 |
| A9706 | 3.0 | 52.0 | 35.0 | 10.0 | 13.638 | O | 1 |
| A9707 | 2.0 | 53.0 | 35.0 | 10.0 | 13.283 | O | 1 |
| A9708 | 1.0 | 54.0 | 35.0 | 10.0 | 12.929 | O | 1 |
| A9709 | 0.0 | 55.0 | 35.0 | 10.0 | 12.574 | O | 1 |
| A9710 | 22.0 | 28.0 | 40.0 | 10.0 | 19.140 | X | 1 |
| A9711 | 21.6 | 28.4 | 40.0 | 10.0 | 19.020 | X | 1 |
| A9712 | 21.5 | 28.5 | 40.0 | 10.0 | 18.990 | O | 1 |
| A9713 | 21.0 | 29.0 | 40.0 | 10.0 | 18.839 | O | 1 |
| A9714 | 15.0 | 35.0 | 40.0 | 10.0 | 17.035 | O | 1 |
| A9715 | 10.0 | 40.0 | 40.0 | 10.0 | 15.530 | O | 1 |
| A9716 | 9.0 | 41.0 | 40.0 | 10.0 | 15.230 | O | 1 |
| A9717 | 8.0 | 42.0 | 40.0 | 10.0 | 14.929 | O | 1 |
| A9718 | 7.0 | 43.0 | 40.0 | 10.0 | 14.628 | O | 1 |
| A9719 | 6.0 | 44.0 | 40.0 | 10.0 | 14.327 | O | 1 |
| A9720 | 5.0 | 45.0 | 40.0 | 10.0 | 14.026 | O | 1 |
| A9721 | 4.0 | 46.0 | 40.0 | 10.0 | 13.687 | O | 1 |
| A9722 | 3.0 | 47.0 | 40.0 | 10.0 | 13.332 | O | 1 |
| A9723 | 2.0 | 48.0 | 40.0 | 10.0 | 12.978 | O | 1 |
| A9724 | 1.0 | 49.0 | 40.0 | 10.0 | 12.623 | O | 1 |
| A9725 | 0.0 | 50.0 | 40.0 | 10.0 | 12.268 | O | 1 |
| A9726 | 23.0 | 22.0 | 45.0 | 10.0 | 19.162 | X | 1 |
| A9727 | 22.5 | 22.5 | 45.0 | 10.0 | 19.011 | X | 1 |
| A9728 | 22.4 | 22.6 | 45.0 | 10.0 | 18.981 | O | 1 |
| A9729 | 22.0 | 23.0 | 45.0 | 10.0 | 18.861 | O | 1 |
| A9730 | 20.0 | 25.0 | 45.0 | 10.0 | 18.259 | O | 1 |
| A9731 | 15.0 | 30.0 | 45.0 | 10.0 | 16.755 | O | 1 |
| A9732 | 10.0 | 35.0 | 45.0 | 10.0 | 15.251 | O | 1 |
| A9733 | 9.0 | 36.0 | 45.0 | 10.0 | 14.950 | O | 1 |
| A9734 | 8.0 | 37.0 | 45.0 | 10.0 | 14.649 | O | 1 |
| A9735 | 7.0 | 38.0 | 45.0 | 10.0 | 14.348 | O | 1 |
| A9736 | 6.0 | 39.0 | 45.0 | 10.0 | 14.047 | O | 1 |
| A9737 | 5.0 | 40.0 | 45.0 | 10.0 | 13.736 | O | 1 |
| A9738 | 4.0 | 41.0 | 45.0 | 10.0 | 13.381 | O | 1 |
| A9739 | 3.0 | 42.0 | 45.0 | 10.0 | 13.027 | O | 1 |
| A9740 | 2.0 | 43.0 | 45.0 | 10.0 | 12.672 | O | 1 |
| A9741 | 1.0 | 44.0 | 45.0 | 10.0 | 12.317 | O | 1 |
| A9742 | 0.0 | 45.0 | 45.0 | 10.0 | 11.963 | O | 1 |
| A9743 | 24.0 | 16.0 | 50.0 | 10.0 | 19.183 | X | 1 |
| A9744 | 23.4 | 16.6 | 50.0 | 10.0 | 19.002 | X | 1 |
| A9745 | 23.3 | 16.7 | 50.0 | 10.0 | 18.972 | O | 1 |
| A9746 | 23.0 | 17.0 | 50.0 | 10.0 | 18.882 | O | 1 |
| A9747 | 20.0 | 20.0 | 50.0 | 10.0 | 17.979 | O | 1 |

[Table 411]

| A9748 | 15.0 | 25.0 | 50.0 | 10.0 | 16.475 | O | 1 |
|---|---|---|---|---|---|---|---|
| A9749 | 10.0 | 30.0 | 50.0 | 10.0 | 14.971 | O | 1 |
| A9750 | 9.0 | 31.0 | 50.0 | 10.0 | 14.670 | O | 1 |
| A9751 | 8.0 | 32.0 | 50.0 | 10.0 | 14.369 | O | 1 |
| A9752 | 7.0 | 33.0 | 50.0 | 10.0 | 14.069 | O | 1 |
| A9753 | 6.0 | 34.0 | 50.0 | 10.0 | 13.768 | O | 1 |
| A9754 | 5.0 | 35.0 | 50.0 | 10.0 | 13.430 | O | 1 |
| A9755 | 4.0 | 36.0 | 50.0 | 10.0 | 13.076 | O | 1 |
| A9756 | 3.0 | 37.0 | 50.0 | 10.0 | 12.721 | O | 1 |
| A9757 | 2.0 | 38.0 | 50.0 | 10.0 | 12.366 | O | 1 |
| A9758 | 1.0 | 39.0 | 50.0 | 10.0 | 12.012 | O | 1 |
| A9759 | 0.0 | 40.0 | 50.0 | 10.0 | 11.657 | O | 1 |
| A9760 | 25.0 | 10.0 | 55.0 | 10.0 | 19.204 | X | 1 |
| A9761 | 24.4 | 10.6 | 55.0 | 10.0 | 19.023 | X | 1 |
| A9762 | 24.3 | 10.7 | 55.0 | 10.0 | 18.993 | O | 1 |
| A9763 | 24.0 | 11.0 | 55.0 | 10.0 | 18.903 | O | 1 |
| A9764 | 20.0 | 15.0 | 55.0 | 10.0 | 17.700 | O | 1 |
| A9765 | 15.0 | 20.0 | 55.0 | 10.0 | 16.196 | O | 1 |
| A9766 | 10.0 | 25.0 | 55.0 | 10.0 | 14.691 | O | 1 |
| A9767 | 9.0 | 26.0 | 55.0 | 10.0 | 14.391 | O | 1 |
| A9768 | 8.0 | 27.0 | 55.0 | 10.0 | 14.090 | O | 1 |
| A9769 | 7.0 | 28.0 | 55.0 | 10.0 | 13.789 | O | 1 |
| A9770 | 6.0 | 29.0 | 55.0 | 10.0 | 13.479 | O | 1 |
| A9771 | 5.0 | 30.0 | 55.0 | 10.0 | 13.125 | O | 1 |
| A9772 | 4.0 | 31.0 | 55.0 | 10.0 | 12.770 | O | 1 |
| A9773 | 3.0 | 32.0 | 55.0 | 10.0 | 12.415 | O | 1 |
| A9774 | 2.0 | 33.0 | 55.0 | 10.0 | 12.061 | O | 1 |
| A9775 | 1.0 | 34.0 | 55.0 | 10.0 | 11.706 | O | 1 |
| A9776 | 0.0 | 35.0 | 55.0 | 10.0 | 11.351 | O | 1 |
| A9777 | 26.0 | 4.0 | 60.0 | 10.0 | 19.225 | X | 1 |
| A9778 | 25.3 | 4.7 | 60.0 | 10.0 | 19.015 | X | 1 |
| A9779 | 25.2 | 4.8 | 60.0 | 10.0 | 18.984 | O | 1 |
| A9780 | 25.0 | 5.0 | 60.0 | 10.0 | 18.924 | O | 1 |
| A9781 | 20.0 | 10.0 | 60.0 | 10.0 | 17.420 | O | 1 |
| A9782 | 15.0 | 15.0 | 60.0 | 10.0 | 15.916 | O | 1 |
| A9783 | 10.0 | 20.0 | 60.0 | 10.0 | 14.412 | O | 1 |
| A9784 | 9.0 | 21.0 | 60.0 | 10.0 | 14.111 | O | 1 |
| A9785 | 8.0 | 22.0 | 60.0 | 10.0 | 13.810 | O | 1 |
| A9786 | 7.0 | 23.0 | 60.0 | 10.0 | 13.509 | O | 1 |
| A9787 | 6.0 | 24.0 | 60.0 | 10.0 | 13.174 | O | 1 |
| A9788 | 5.0 | 25.0 | 60.0 | 10.0 | 12.819 | O | 1 |
| A9789 | 4.0 | 26.0 | 60.0 | 10.0 | 12.464 | O | 1 |
| A9790 | 3.0 | 27.0 | 60.0 | 10.0 | 12.110 | O | 1 |
| A9791 | 2.0 | 28.0 | 60.0 | 10.0 | 11.755 | O | 1 |
| A9792 | 1.0 | 29.0 | 60.0 | 10.0 | 11.400 | O | 1 |
| A9793 | 0.0 | 30.0 | 60.0 | 10.0 | 11.046 | O | 1 |
| A9794 | 20.0 | 55.0 | 5.0 | 20.0 | 19.004 | X | 1 |
| A9795 | 19.9 | 55.1 | 5.0 | 20.0 | 18.974 | O | 1 |
| A9796 | 19.0 | 56.0 | 5.0 | 20.0 | 18.703 | O | 1 |
| A9797 | 15.0 | 60.0 | 5.0 | 20.0 | 17.500 | O | 1 |

[Table 412]

| A9798 | 10.0 | 65.0 | 5.0 | 20.0 | 15.996 | O | 1 |
|---|---|---|---|---|---|---|---|
| A9799 | 9.0 | 66.0 | 5.0 | 20.0 | 15.695 | O | 1 |
| A9800 | 8.0 | 67.0 | 5.0 | 20.0 | 15.394 | O | 1 |
| A9801 | 7.0 | 68.0 | 5.0 | 20.0 | 15.093 | O | 1 |
| A9802 | 6.0 | 69.0 | 5.0 | 20.0 | 14.792 | O | 1 |
| A9803 | 5.0 | 70.0 | 5.0 | 20.0 | 14.492 | O | 1 |
| A9804 | 4.0 | 71.0 | 5.0 | 20.0 | 14.191 | O | 1 |
| A9805 | 3.0 | 72.0 | 5.0 | 20.0 | 13.890 | O | 1 |
| A9806 | 2.0 | 73.0 | 5.0 | 20.0 | 13.580 | O | 1 |
| A9807 | 1.0 | 74.0 | 5.0 | 20.0 | 13.225 | O | 1 |
| A9808 | 0.0 | 75.0 | 5.0 | 20.0 | 12.870 | O | 1 |
| A9809 | 21.0 | 49.0 | 10.0 | 20.0 | 19.025 | X | 1 |
| A9810 | 20.9 | 49.1 | 10.0 | 20.0 | 18.995 | O | 1 |
| A9811 | 20.0 | 50.0 | 10.0 | 20.0 | 18.724 | O | 1 |
| A9812 | 15.0 | 55.0 | 10.0 | 20.0 | 17.220 | O | 1 |
| A9813 | 10.0 | 60.0 | 10.0 | 20.0 | 15.716 | O | 1 |
| A9814 | 9.0 | 61.0 | 10.0 | 20.0 | 15.415 | O | 1 |
| A9815 | 8.0 | 62.0 | 10.0 | 20.0 | 15.114 | O | 1 |
| A9816 | 7.0 | 63.0 | 10.0 | 20.0 | 14.814 | O | 1 |
| A9817 | 6.0 | 64.0 | 10.0 | 20.0 | 14.513 | O | 1 |
| A9818 | 5.0 | 65.0 | 10.0 | 20.0 | 14.212 | O | 1 |
| A9819 | 4.0 | 66.0 | 10.0 | 20.0 | 13.911 | O | 1 |
| A9820 | 3.0 | 67.0 | 10.0 | 20.0 | 13.610 | O | 1 |
| A9821 | 2.0 | 68.0 | 10.0 | 20.0 | 13.274 | O | 1 |
| A9822 | 1.0 | 69.0 | 10.0 | 20.0 | 12.919 | O | 1 |
| A9823 | 0.0 | 70.0 | 10.0 | 20.0 | 12.565 | O | 1 |
| A9824 | 22.0 | 43.0 | 15.0 | 20.0 | 19.046 | X | 1 |
| A9825 | 21.9 | 43.1 | 15.0 | 20.0 | 19.016 | X | 1 |
| A9826 | 21.8 | 43.2 | 15.0 | 20.0 | 18.986 | O | 1 |
| A9827 | 21.0 | 44.0 | 15.0 | 20.0 | 18.746 | O | 1 |
| A9828 | 20.0 | 45.0 | 15.0 | 20.0 | 18.445 | O | 1 |
| A9829 | 15.0 | 50.0 | 15.0 | 20.0 | 16.941 | O | 1 |
| A9830 | 10.0 | 55.0 | 15.0 | 20.0 | 15.436 | O | 1 |
| A9831 | 9.0 | 56.0 | 15.0 | 20.0 | 15.136 | O | 1 |
| A9832 | 8.0 | 57.0 | 15.0 | 20.0 | 14.835 | O | 1 |
| A9833 | 7.0 | 58.0 | 15.0 | 20.0 | 14.534 | O | 1 |
| A9834 | 6.0 | 59.0 | 15.0 | 20.0 | 14.233 | O | 1 |
| A9835 | 5.0 | 60.0 | 15.0 | 20.0 | 13.932 | O | 1 |
| A9836 | 4.0 | 61.0 | 15.0 | 20.0 | 13.631 | O | 1 |
| A9837 | 3.0 | 62.0 | 15.0 | 20.0 | 13.323 | O | 1 |
| A9838 | 2.0 | 63.0 | 15.0 | 20.0 | 12.969 | O | 1 |
| A9839 | 1.0 | 64.0 | 15.0 | 20.0 | 12.614 | O | 1 |
| A9840 | 0.0 | 65.0 | 15.0 | 20.0 | 12.259 | O | 1 |
| A9841 | 23.0 | 37.0 | 20.0 | 20.0 | 19.068 | X | 1 |
| A9842 | 22.8 | 37.2 | 20.0 | 20.0 | 19.007 | X | 1 |
| A9843 | 22.7 | 37.3 | 20.0 | 20.0 | 18.977 | O | 1 |
| A9844 | 22.0 | 38.0 | 20.0 | 20.0 | 18.767 | O | 1 |
| A9845 | 20.0 | 40.0 | 20.0 | 20.0 | 18.165 | O | 1 |
| A9846 | 15.0 | 45.0 | 20.0 | 20.0 | 16.661 | O | 1 |
| A9847 | 10.0 | 50.0 | 20.0 | 20.0 | 15.157 | O | 1 |

[Table 413]

432

| A9848 | 9.0 | 51.0 | 20.0 | 20.0 | 14.856 | O | 1 |
|---|---|---|---|---|---|---|---|
| A9849 | 8.0 | 52.0 | 20.0 | 20.0 | 14.555 | O | 1 |
| A9850 | 7.0 | 53.0 | 20.0 | 20.0 | 14.254 | O | 1 |
| A9851 | 6.0 | 54.0 | 20.0 | 20.0 | 13.954 | O | 1 |
| A9852 | 5.0 | 55.0 | 20.0 | 20.0 | 13.653 | O | 1 |
| A9853 | 4.0 | 56.0 | 20.0 | 20.0 | 13.352 | O | 1 |
| A9854 | 3.0 | 57.0 | 20.0 | 20.0 | 13.018 | O | 1 |
| A9855 | 2.0 | 58.0 | 20.0 | 20.0 | 12.663 | O | 1 |
| A9856 | 1.0 | 59.0 | 20.0 | 20.0 | 12.308 | O | 1 |
| A9857 | 0.0 | 60.0 | 20.0 | 20.0 | 11.953 | O | 1 |
| A9858 | 24.0 | 31.0 | 25.0 | 20.0 | 19.089 | X | 1 |
| A9859 | 23.8 | 31.2 | 25.0 | 20.0 | 19.029 | X | 1 |
| A9860 | 23.7 | 31.3 | 25.0 | 20.0 | 18.999 | O | 1 |
| A9861 | 23.0 | 32.0 | 25.0 | 20.0 | 18.788 | O | 1 |
| A9862 | 20.0 | 35.0 | 25.0 | 20.0 | 17.886 | O | 1 |
| A9863 | 15.0 | 40.0 | 25.0 | 20.0 | 16.381 | O | 1 |
| A9864 | 10.0 | 45.0 | 25.0 | 20.0 | 14.877 | O | 1 |
| A9865 | 9.0 | 46.0 | 25.0 | 20.0 | 14.576 | O | 1 |
| A9866 | 8.0 | 47.0 | 25.0 | 20.0 | 14.276 | O | 1 |
| A9867 | 7.0 | 48.0 | 25.0 | 20.0 | 13.975 | O | 1 |
| A9868 | 6.0 | 49.0 | 25.0 | 20.0 | 13.674 | O | 1 |
| A9869 | 5.0 | 50.0 | 25.0 | 20.0 | 13.373 | O | 1 |
| A9870 | 4.0 | 51.0 | 25.0 | 20.0 | 13.067 | O | 1 |
| A9871 | 3.0 | 52.0 | 25.0 | 20.0 | 12.712 | O | 1 |
| A9872 | 2.0 | 53.0 | 25.0 | 20.0 | 12.357 | O | 1 |
| A9873 | 1.0 | 54.0 | 25.0 | 20.0 | 12.002 | O | 1 |
| A9874 | 0.0 | 55.0 | 25.0 | 20.0 | 11.648 | O | 1 |
| A9875 | 25.0 | 25.0 | 30.0 | 20.0 | 19.110 | X | 1 |
| A9876 | 24.7 | 25.3 | 30.0 | 20.0 | 19.020 | X | 1 |
| A9877 | 24.6 | 25.4 | 30.0 | 20.0 | 18.990 | O | 1 |
| A9878 | 24.0 | 26.0 | 30.0 | 20.0 | 18.809 | O | 1 |
| A9879 | 20.0 | 30.0 | 30.0 | 20.0 | 17.606 | O | 1 |
| A9880 | 15.0 | 35.0 | 30.0 | 20.0 | 16.102 | O | 1 |
| A9881 | 10.0 | 40.0 | 30.0 | 20.0 | 14.598 | O | 1 |
| A9882 | 9.0 | 41.0 | 30.0 | 20.0 | 14.297 | O | 1 |
| A9883 | 8.0 | 42.0 | 30.0 | 20.0 | 13.996 | O | 1 |
| A9884 | 7.0 | 43.0 | 30.0 | 20.0 | 13.695 | O | 1 |
| A9885 | 6.0 | 44.0 | 30.0 | 20.0 | 13.394 | O | 1 |
| A9886 | 5.0 | 45.0 | 30.0 | 20.0 | 13.093 | O | 1 |
| A9887 | 4.0 | 46.0 | 30.0 | 20.0 | 12.761 | O | 1 |
| A9888 | 3.0 | 47.0 | 30.0 | 20.0 | 12.406 | O | 1 |
| A9889 | 2.0 | 48.0 | 30.0 | 20.0 | 12.052 | O | 1 |
| A9890 | 1.0 | 49.0 | 30.0 | 20.0 | 11.697 | O | 1 |
| A9891 | 0.0 | 50.0 | 30.0 | 20.0 | 11.342 | O | 1 |
| A9892 | 26.0 | 19.0 | 35.0 | 20.0 | 19.131 | X | 1 |
| A9893 | 25.6 | 19.4 | 35.0 | 20.0 | 19.011 | X | 1 |
| A9894 | 25.5 | 19.5 | 35.0 | 20.0 | 18.981 | O | 1 |
| A9895 | 25.0 | 20.0 | 35.0 | 20.0 | 18.830 | O | 1 |
| A9896 | 20.0 | 25.0 | 35.0 | 20.0 | 17.326 | O | 1 |
| A9897 | 15.0 | 30.0 | 35.0 | 20.0 | 15.822 | O | 1 |

[Table 414]

| | | | | | | | |
|---|---|---|---|---|---|---|---|
| A9898 | 10.0 | 35.0 | 35.0 | 20.0 | 14.318 | O | 1 |
| A9899 | 9.0 | 36.0 | 35.0 | 20.0 | 14.017 | O | 1 |
| A9900 | 8.0 | 37.0 | 35.0 | 20.0 | 13.716 | O | 1 |
| A9901 | 7.0 | 38.0 | 35.0 | 20.0 | 13.415 | O | 1 |
| A9902 | 6.0 | 39.0 | 35.0 | 20.0 | 13.115 | O | 1 |
| A9903 | 5.0 | 40.0 | 35.0 | 20.0 | 12.810 | O | 1 |
| A9904 | 4.0 | 41.0 | 35.0 | 20.0 | 12.455 | O | 1 |
| A9905 | 3.0 | 42.0 | 35.0 | 20.0 | 12.101 | O | 1 |
| A9906 | 2.0 | 43.0 | 35.0 | 20.0 | 11.746 | O | 1 |
| A9907 | 1.0 | 44.0 | 35.0 | 20.0 | 11.391 | O | 1 |
| A9908 | 0.0 | 45.0 | 35.0 | 20.0 | 11.036 | O | 1 |
| A9909 | 27.0 | 13.0 | 40.0 | 20.0 | 19.152 | X | 1 |
| A9910 | 26.5 | 13.5 | 40.0 | 20.0 | 19.002 | X | 1 |
| A9911 | 26.4 | 13.6 | 40.0 | 20.0 | 18.972 | O | 1 |
| A9912 | 26.0 | 14.0 | 40.0 | 20.0 | 18.852 | O | 1 |
| A9913 | 20.0 | 20.0 | 40.0 | 20.0 | 17.047 | O | 1 |
| A9914 | 15.0 | 25.0 | 40.0 | 20.0 | 15.542 | O | 1 |
| A9915 | 10.0 | 30.0 | 40.0 | 20.0 | 14.038 | O | 1 |
| A9916 | 9.0 | 31.0 | 40.0 | 20.0 | 13.737 | O | 1 |
| A9917 | 8.0 | 32.0 | 40.0 | 20.0 | 13.437 | O | 1 |
| A9918 | 7.0 | 33.0 | 40.0 | 20.0 | 13.136 | O | 1 |
| A9919 | 6.0 | 34.0 | 40.0 | 20.0 | 12.835 | O | 1 |
| A9920 | 5.0 | 35.0 | 40.0 | 20.0 | 12.504 | O | 1 |
| A9921 | 4.0 | 36.0 | 40.0 | 20.0 | 12.150 | O | 1 |
| A9922 | 3.0 | 37.0 | 40.0 | 20.0 | 11.795 | O | 1 |
| A9923 | 2.0 | 38.0 | 40.0 | 20.0 | 11.440 | O | 1 |
| A9924 | 1.0 | 39.0 | 40.0 | 20.0 | 11.086 | O | 1 |
| A9925 | 0.0 | 40.0 | 40.0 | 20.0 | 10.731 | O | 1 |
| A9926 | 28.0 | 7.0 | 45.0 | 20.0 | 19.174 | X | 1 |
| A9927 | 27.5 | 7.5 | 45.0 | 20.0 | 19.023 | X | 1 |
| A9928 | 27.4 | 7.6 | 45.0 | 20.0 | 18.993 | O | 1 |
| A9929 | 27.0 | 8.0 | 45.0 | 20.0 | 18.873 | O | 1 |
| A9930 | 20.0 | 15.0 | 45.0 | 20.0 | 16.767 | O | 1 |
| A9931 | 15.0 | 20.0 | 45.0 | 20.0 | 15.263 | O | 1 |
| A9932 | 10.0 | 25.0 | 45.0 | 20.0 | 13.759 | O | 1 |
| A9933 | 9.0 | 26.0 | 45.0 | 20.0 | 13.458 | O | 1 |
| A9934 | 8.0 | 27.0 | 45.0 | 20.0 | 13.157 | O | 1 |
| A9935 | 7.0 | 28.0 | 45.0 | 20.0 | 12.856 | O | 1 |
| A9936 | 6.0 | 29.0 | 45.0 | 20.0 | 12.553 | O | 1 |
| A9937 | 5.0 | 30.0 | 45.0 | 20.0 | 12.199 | O | 1 |
| A9938 | 4.0 | 31.0 | 45.0 | 20.0 | 11.844 | O | 1 |
| A9939 | 3.0 | 32.0 | 45.0 | 20.0 | 11.489 | O | 1 |
| A9940 | 2.0 | 33.0 | 45.0 | 20.0 | 11.135 | O | 1 |
| A9941 | 1.0 | 34.0 | 45.0 | 20.0 | 10.780 | O | 1 |
| A9942 | 0.0 | 35.0 | 45.0 | 20.0 | 10.425 | O | 1 |
| A9943 | 29.0 | 1.0 | 50.0 | 20.0 | 19.195 | X | 1 |
| A9944 | 28.4 | 1.6 | 50.0 | 20.0 | 19.014 | X | 1 |
| A9945 | 28.3 | 1.7 | 50.0 | 20.0 | 18.984 | O | 1 |
| A9946 | 28.0 | 2.0 | 50.0 | 20.0 | 18.894 | O | 1 |
| A9947 | 20.0 | 10.0 | 50.0 | 20.0 | 16.487 | O | 1 |

[Table 415]

| A9948 | 15.0 | 15.0 | 50.0 | 20.0 | 14.983 | O | 1 |
|---|---|---|---|---|---|---|---|
| A9949 | 10.0 | 20.0 | 50.0 | 20.0 | 13.479 | O | 1 |
| A9950 | 9.0 | 21.0 | 50.0 | 20.0 | 13.178 | O | 1 |
| A9951 | 8.0 | 22.0 | 50.0 | 20.0 | 12.877 | O | 1 |
| A9952 | 7.0 | 23.0 | 50.0 | 20.0 | 12.577 | O | 1 |
| A9953 | 6.0 | 24.0 | 50.0 | 20.0 | 12.248 | O | 1 |
| A9954 | 5.0 | 25.0 | 50.0 | 20.0 | 11.893 | O | 1 |
| A9955 | 4.0 | 26.0 | 50.0 | 20.0 | 11.538 | O | 1 |
| A9956 | 3.0 | 27.0 | 50.0 | 20.0 | 11.184 | O | 1 |
| A9957 | 2.0 | 28.0 | 50.0 | 20.0 | 10.829 | O | 1 |
| A9958 | 1.0 | 29.0 | 50.0 | 20.0 | 10.474 | O | 1 |
| A9959 | 0.0 | 30.0 | 50.0 | 20.0 | 10.119 | O | 1 |
| A9960 | 25.0 | 40.0 | 5.0 | 30.0 | 19.016 | X | 1 |
| A9961 | 24.9 | 40.1 | 5.0 | 30.0 | 18.986 | O | 1 |
| A9962 | 24.0 | 41.0 | 5.0 | 30.0 | 18.715 | O | 1 |
| A9963 | 20.0 | 45.0 | 5.0 | 30.0 | 17.512 | O | 1 |
| A9964 | 15.0 | 50.0 | 5.0 | 30.0 | 16.008 | O | 1 |
| A9965 | 10.0 | 55.0 | 5.0 | 30.0 | 14.504 | O | 1 |
| A9966 | 9.0 | 56.0 | 5.0 | 30.0 | 14.203 | O | 1 |
| A9967 | 8.0 | 57.0 | 5.0 | 30.0 | 13.902 | O | 1 |
| A9968 | 7.0 | 58.0 | 5.0 | 30.0 | 13.601 | O | 1 |
| A9969 | 6.0 | 59.0 | 5.0 | 30.0 | 13.300 | O | 1 |
| A9970 | 5.0 | 60.0 | 5.0 | 30.0 | 13.000 | O | 1 |
| A9971 | 4.0 | 61.0 | 5.0 | 30.0 | 12.699 | O | 1 |
| A9972 | 3.0 | 62.0 | 5.0 | 30.0 | 12.397 | O | 1 |
| A9973 | 2.0 | 63.0 | 5.0 | 30.0 | 12.042 | O | 1 |
| A9974 | 1.0 | 64.0 | 5.0 | 30.0 | 11.688 | O | 1 |
| A9975 | 0.0 | 65.0 | 5.0 | 30.0 | 11.333 | O | 1 |
| A9976 | 26.0 | 34.0 | 10.0 | 30.0 | 19.037 | X | 1 |
| A9977 | 25.9 | 34.1 | 10.0 | 30.0 | 19.007 | X | 1 |
| A9978 | 25.8 | 34.2 | 10.0 | 30.0 | 18.977 | O | 1 |
| A9979 | 25.0 | 35.0 | 10.0 | 30.0 | 18.737 | O | 1 |
| A9980 | 20.0 | 40.0 | 10.0 | 30.0 | 17.232 | O | 1 |
| A9981 | 15.0 | 45.0 | 10.0 | 30.0 | 15.728 | O | 1 |
| A9982 | 10.0 | 50.0 | 10.0 | 30.0 | 14.224 | O | 1 |
| A9983 | 9.0 | 51.0 | 10.0 | 30.0 | 13.923 | O | 1 |
| A9984 | 8.0 | 52.0 | 10.0 | 30.0 | 13.622 | O | 1 |
| A9985 | 7.0 | 53.0 | 10.0 | 30.0 | 13.322 | O | 1 |
| A9986 | 6.0 | 54.0 | 10.0 | 30.0 | 13.021 | O | 1 |
| A9987 | 5.0 | 55.0 | 10.0 | 30.0 | 12.720 | O | 1 |
| A9988 | 4.0 | 56.0 | 10.0 | 30.0 | 12.419 | O | 1 |
| A9989 | 3.0 | 57.0 | 10.0 | 30.0 | 12.091 | O | 1 |
| A9990 | 2.0 | 58.0 | 10.0 | 30.0 | 11.737 | O | 1 |
| A9991 | 1.0 | 59.0 | 10.0 | 30.0 | 11.382 | O | 1 |
| A9992 | 0.0 | 60.0 | 10.0 | 30.0 | 11.027 | O | 1 |
| A9993 | 27.0 | 28.0 | 15.0 | 30.0 | 19.059 | X | 1 |
| A9994 | 26.9 | 28.1 | 15.0 | 30.0 | 19.028 | X | 1 |
| A9995 | 26.8 | 28.2 | 15.0 | 30.0 | 18.998 | O | 1 |
| A9996 | 26.0 | 29.0 | 15.0 | 30.0 | 18.758 | O | 1 |
| A9997 | 20.0 | 35.0 | 15.0 | 30.0 | 16.953 | O | 1 |

[Table 416]

| A9998 | 15.0 | 40.0 | 15.0 | 30.0 | 15.449 | O | 1 |
|---|---|---|---|---|---|---|---|
| A9999 | 10.0 | 45.0 | 15.0 | 30.0 | 13.944 | O | 1 |
| A10000 | 9.0 | 46.0 | 15.0 | 30.0 | 13.644 | O | 1 |
| A10001 | 8.0 | 47.0 | 15.0 | 30.0 | 13.343 | O | 1 |
| A10002 | 7.0 | 48.0 | 15.0 | 30.0 | 13.042 | O | 1 |
| A10003 | 6.0 | 49.0 | 15.0 | 30.0 | 12.741 | O | 1 |
| A10004 | 5.0 | 50.0 | 15.0 | 30.0 | 12.440 | O | 1 |
| A10005 | 4.0 | 51.0 | 15.0 | 30.0 | 12.139 | O | 1 |
| A10006 | 3.0 | 52.0 | 15.0 | 30.0 | 11.786 | O | 1 |
| A10007 | 2.0 | 53.0 | 15.0 | 30.0 | 11.431 | O | 1 |
| A10008 | 1.0 | 54.0 | 15.0 | 30.0 | 11.076 | O | 1 |
| A10009 | 0.0 | 55.0 | 15.0 | 30.0 | 10.722 | O | 1 |
| A10010 | 28.0 | 22.0 | 20.0 | 30.0 | 19.080 | X | 1 |
| A10011 | 27.8 | 22.2 | 20.0 | 30.0 | 19.020 | X | 1 |
| A10012 | 27.7 | 22.3 | 20.0 | 30.0 | 18.990 | O | 1 |
| A10013 | 27.0 | 23.0 | 20.0 | 30.0 | 18.779 | O | 1 |
| A10014 | 20.0 | 30.0 | 20.0 | 30.0 | 16.673 | O | 1 |
| A10015 | 15.0 | 35.0 | 20.0 | 30.0 | 15.169 | O | 1 |
| A10016 | 10.0 | 40.0 | 20.0 | 30.0 | 13.665 | O | 1 |
| A10017 | 9.0 | 41.0 | 20.0 | 30.0 | 13.364 | O | 1 |
| A10018 | 8.0 | 42.0 | 20.0 | 30.0 | 13.063 | O | 1 |
| A10019 | 7.0 | 43.0 | 20.0 | 30.0 | 12.762 | O | 1 |
| A10020 | 6.0 | 44.0 | 20.0 | 30.0 | 12.461 | O | 1 |
| A10021 | 5.0 | 45.0 | 20.0 | 30.0 | 12.161 | O | 1 |
| A10022 | 4.0 | 46.0 | 20.0 | 30.0 | 11.835 | O | 1 |
| A10023 | 3.0 | 47.0 | 20.0 | 30.0 | 11.480 | O | 1 |
| A10024 | 2.0 | 48.0 | 20.0 | 30.0 | 11.125 | O | 1 |
| A10025 | 1.0 | 49.0 | 20.0 | 30.0 | 10.771 | O | 1 |
| A10026 | 0.0 | 45.0 | 25.0 | 30.0 | 10.110 | O | 1 |
| A10027 | 29.0 | 16.0 | 25.0 | 30.0 | 19.101 | X | 1 |
| A10028 | 28.7 | 16.3 | 25.0 | 30.0 | 19.011 | X | 1 |
| A10029 | 28.6 | 16.4 | 25.0 | 30.0 | 18.981 | O | 1 |
| A10030 | 28.0 | 17.0 | 25.0 | 30.0 | 18.800 | O | 1 |
| A10031 | 20.0 | 25.0 | 25.0 | 30.0 | 16.393 | O | 1 |
| A10032 | 15.0 | 30.0 | 25.0 | 30.0 | 14.889 | O | 1 |
| A10033 | 10.0 | 35.0 | 25.0 | 30.0 | 13.385 | O | 1 |
| A10034 | 9.0 | 36.0 | 25.0 | 30.0 | 13.084 | O | 1 |
| A10035 | 8.0 | 37.0 | 25.0 | 30.0 | 12.784 | O | 1 |
| A10036 | 7.0 | 38.0 | 25.0 | 30.0 | 12.483 | O | 1 |
| A10037 | 6.0 | 39.0 | 25.0 | 30.0 | 12.182 | O | 1 |
| A10038 | 5.0 | 40.0 | 25.0 | 30.0 | 11.881 | O | 1 |
| A10039 | 4.0 | 41.0 | 25.0 | 30.0 | 11.529 | O | 1 |
| A10040 | 3.0 | 42.0 | 25.0 | 30.0 | 11.174 | O | 1 |
| A10041 | 2.0 | 43.0 | 25.0 | 30.0 | 10.820 | O | 1 |
| A10042 | 1.0 | 44.0 | 25.0 | 30.0 | 10.465 | O | 1 |
| A10043 | 0.0 | 45.0 | 25.0 | 30.0 | 10.110 | O | 1 |
| A10044 | 30.0 | 10.0 | 30.0 | 30.0 | 19.122 | X | 1 |
| A10045 | 29.6 | 10.4 | 30.0 | 30.0 | 19.002 | X | 1 |
| A10046 | 29.5 | 10.5 | 30.0 | 30.0 | 18.972 | O | 1 |
| A10047 | 29.0 | 11.0 | 30.0 | 30.0 | 18.821 | O | 1 |

[Table 417]

| A10048 | 20.0 | 20.0 | 30.0 | 30.0 | 16.114 | O | 1 |
|---|---|---|---|---|---|---|---|
| A10049 | 15.0 | 25.0 | 30.0 | 30.0 | 14.610 | O | 1 |
| A10050 | 10.0 | 30.0 | 30.0 | 30.0 | 13.106 | O | 1 |
| A10051 | 9.0 | 31.0 | 30.0 | 30.0 | 12.805 | O | 1 |
| A10052 | 8.0 | 32.0 | 30.0 | 30.0 | 12.504 | O | 1 |
| A10053 | 7.0 | 33.0 | 30.0 | 30.0 | 12.203 | O | 1 |
| A10054 | 6.0 | 34.0 | 30.0 | 30.0 | 11.902 | O | 1 |
| A10055 | 5.0 | 35.0 | 30.0 | 30.0 | 11.578 | O | 1 |
| A10056 | 4.0 | 36.0 | 30.0 | 30.0 | 11.223 | O | 1 |
| A10057 | 3.0 | 37.0 | 30.0 | 30.0 | 10.869 | O | 1 |
| A10058 | 2.0 | 38.0 | 30.0 | 30.0 | 10.514 | O | 1 |
| A10059 | 1.0 | 39.0 | 30.0 | 30.0 | 10.159 | O | 1 |
| A10060 | 0.0 | 40.0 | 30.0 | 30.0 | 9.805 | O | 1 |
| A10061 | 31.0 | 4.0 | 35.0 | 30.0 | 19.143 | X | 1 |
| A10062 | 30.6 | 4.4 | 35.0 | 30.0 | 19.023 | X | 1 |
| A10063 | 30.5 | 4.5 | 35.0 | 30.0 | 18.993 | O | 1 |
| A10064 | 30.0 | 5.0 | 35.0 | 30.0 | 18.843 | O | 1 |
| A10065 | 20.0 | 15.0 | 35.0 | 30.0 | 15.834 | O | 1 |
| A10066 | 15.0 | 20.0 | 35.0 | 30.0 | 14.330 | O | 1 |
| A10067 | 10.0 | 25.0 | 35.0 | 30.0 | 12.826 | O | 1 |
| A10068 | 9.0 | 26.0 | 35.0 | 30.0 | 12.525 | O | 1 |
| A10069 | 8.0 | 27.0 | 35.0 | 30.0 | 12.224 | O | 1 |
| A10070 | 7.0 | 28.0 | 35.0 | 30.0 | 11.923 | O | 1 |
| A10071 | 6.0 | 29.0 | 35.0 | 30.0 | 11.623 | O | 1 |
| A10072 | 5.0 | 30.0 | 35.0 | 30.0 | 11.272 | O | 1 |
| A10073 | 4.0 | 31.0 | 35.0 | 30.0 | 10.918 | O | 1 |
| A10074 | 3.0 | 32.0 | 35.0 | 30.0 | 10.563 | O | 1 |
| A10075 | 2.0 | 33.0 | 35.0 | 30.0 | 10.208 | O | 1 |
| A10076 | 1.0 | 34.0 | 35.0 | 30.0 | 9.854 | O | 1 |
| A10077 | 0.0 | 35.0 | 35.0 | 30.0 | 9.499 | O | 1 |
| A10078 | 30.0 | 25.0 | 5.0 | 40.0 | 19.028 | X | 1 |
| A10079 | 29.9 | 25.1 | 5.0 | 40.0 | 18.998 | O | 1 |
| A10080 | 29.0 | 26.0 | 5.0 | 40.0 | 18.727 | O | 1 |
| A10081 | 20.0 | 35.0 | 5.0 | 40.0 | 16.020 | O | 1 |
| A10082 | 15.0 | 40.0 | 5.0 | 40.0 | 14.516 | O | 1 |
| A10083 | 10.0 | 45.0 | 5.0 | 40.0 | 13.012 | O | 1 |
| A10084 | 9.0 | 46.0 | 5.0 | 40.0 | 12.711 | O | 1 |
| A10085 | 8.0 | 47.0 | 5.0 | 40.0 | 12.410 | O | 1 |
| A10086 | 7.0 | 48.0 | 5.0 | 40.0 | 12.109 | O | 1 |
| A10087 | 6.0 | 49.0 | 5.0 | 40.0 | 11.808 | O | 1 |
| A10088 | 5.0 | 50.0 | 5.0 | 40.0 | 11.508 | O | 1 |
| A10089 | 4.0 | 51.0 | 5.0 | 40.0 | 11.207 | O | 1 |
| A10090 | 3.0 | 52.0 | 5.0 | 40.0 | 10.860 | O | 1 |
| A10091 | 2.0 | 53.0 | 5.0 | 40.0 | 10.505 | O | 1 |
| A10092 | 1.0 | 54.0 | 5.0 | 40.0 | 10.150 | O | 1 |
| A10093 | 0.0 | 55.0 | 5.0 | 40.0 | 9.795 | O | 1 |
| A10094 | 31.0 | 19.0 | 10.0 | 40.0 | 19.049 | X | 1 |
| A10095 | 30.9 | 19.1 | 10.0 | 40.0 | 19.019 | X | 1 |
| A10096 | 30.8 | 19.2 | 10.0 | 40.0 | 18.989 | O | 1 |
| A10097 | 30.0 | 20.0 | 10.0 | 40.0 | 18.749 | O | 1 |

[Table 418]

| A10098 | 20.0 | 30.0 | 10.0 | 40.0 | 15.740 | O | 1 |
|--------|------|------|------|------|--------|---|---|
| A10099 | 15.0 | 35.0 | 10.0 | 40.0 | 14.236 | O | 1 |
| A10100 | 10.0 | 40.0 | 10.0 | 40.0 | 12.732 | O | 1 |
| A10101 | 9.0 | 41.0 | 10.0 | 40.0 | 12.431 | O | 1 |
| A10102 | 8.0 | 42.0 | 10.0 | 40.0 | 12.130 | O | 1 |
| A10103 | 7.0 | 43.0 | 10.0 | 40.0 | 11.830 | O | 1 |
| A10104 | 6.0 | 44.0 | 10.0 | 40.0 | 11.529 | O | 1 |
| A10105 | 5.0 | 45.0 | 10.0 | 40.0 | 11.228 | O | 1 |
| A10106 | 4.0 | 46.0 | 10.0 | 40.0 | 10.909 | O | 1 |
| A10107 | 3.0 | 47.0 | 10.0 | 40.0 | 10.554 | O | 1 |
| A10108 | 2.0 | 48.0 | 10.0 | 40.0 | 10.199 | O | 1 |
| A10109 | 1.0 | 49.0 | 10.0 | 40.0 | 9.844 | O | 1 |
| A10110 | 0.0 | 50.0 | 10.0 | 40.0 | 9.490 | O | 1 |
| A10111 | 32.0 | 13.0 | 15.0 | 40.0 | 19.071 | X | 1 |
| A10112 | 31.8 | 13.2 | 15.0 | 40.0 | 19.011 | X | 1 |
| A10113 | 31.7 | 13.3 | 15.0 | 40.0 | 18.980 | O | 1 |
| A10114 | 31.0 | 14.0 | 15.0 | 40.0 | 18.770 | O | 1 |
| A10115 | 30.0 | 15.0 | 15.0 | 40.0 | 18.469 | O | 1 |
| A10116 | 20.0 | 25.0 | 15.0 | 40.0 | 15.461 | O | 1 |
| A10117 | 15.0 | 30.0 | 15.0 | 40.0 | 13.957 | O | 1 |
| A10118 | 10.0 | 35.0 | 15.0 | 40.0 | 12.452 | O | 1 |
| A10119 | 9.0 | 36.0 | 15.0 | 40.0 | 12.152 | O | 1 |
| A10120 | 8.0 | 37.0 | 15.0 | 40.0 | 11.851 | O | 1 |
| A10121 | 7.0 | 38.0 | 15.0 | 40.0 | 11.550 | O | 1 |
| A10122 | 6.0 | 39.0 | 15.0 | 40.0 | 11.249 | O | 1 |
| A10123 | 5.0 | 40.0 | 15.0 | 40.0 | 10.948 | O | 1 |
| A10124 | 4.0 | 41.0 | 15.0 | 40.0 | 10.603 | O | 1 |
| A10125 | 3.0 | 42.0 | 15.0 | 40.0 | 10.248 | O | 1 |
| A10126 | 2.0 | 43.0 | 15.0 | 40.0 | 9.894 | O | 1 |
| A10127 | 1.0 | 44.0 | 15.0 | 40.0 | 9.539 | O | 1 |
| A10128 | 0.0 | 45.0 | 15.0 | 40.0 | 9.184 | O | 1 |
| A10129 | 33.0 | 7.0 | 20.0 | 40.0 | 19.092 | X | 1 |
| A10130 | 32.7 | 7.3 | 20.0 | 40.0 | 19.002 | X | 1 |
| A10131 | 32.6 | 7.4 | 20.0 | 40.0 | 18.972 | O | 1 |
| A10132 | 32.0 | 8.0 | 20.0 | 40.0 | 18.791 | O | 1 |
| A10133 | 30.0 | 10.0 | 20.0 | 40.0 | 18.189 | O | 1 |
| A10134 | 20.0 | 20.0 | 20.0 | 40.0 | 15.181 | O | 1 |
| A10135 | 15.0 | 25.0 | 20.0 | 40.0 | 13.677 | O | 1 |
| A10136 | 10.0 | 30.0 | 20.0 | 40.0 | 12.173 | O | 1 |
| A10137 | 9.0 | 31.0 | 20.0 | 40.0 | 11.872 | O | 1 |
| A10138 | 8.0 | 32.0 | 20.0 | 40.0 | 11.571 | O | 1 |
| A10139 | 7.0 | 33.0 | 20.0 | 40.0 | 11.270 | O | 1 |
| A10140 | 6.0 | 34.0 | 20.0 | 40.0 | 10.969 | O | 1 |
| A10141 | 5.0 | 35.0 | 20.0 | 40.0 | 10.652 | O | 1 |
| A10142 | 4.0 | 36.0 | 20.0 | 40.0 | 10.297 | O | 1 |
| A10143 | 3.0 | 37.0 | 20.0 | 40.0 | 9.943 | O | 1 |
| A10144 | 2.0 | 38.0 | 20.0 | 40.0 | 9.588 | O | 1 |
| A10145 | 1.0 | 39.0 | 20.0 | 40.0 | 9.233 | O | 1 |
| A10146 | 0.0 | 40.0 | 20.0 | 40.0 | 8.878 | O | 1 |
| A10147 | 34.0 | 1.0 | 25.0 | 40.0 | 19.113 | X | 1 |

[Table 419]

EP 4 442 787 A1

| A10148 | 33.7 | 1.3 | 25.0 | 40.0 | 19.023 | X | 1 |
| A10149 | 33.6 | 1.4 | 25.0 | 40.0 | 18.993 | O | 1 |
| A10150 | 33.0 | 2.0 | 25.0 | 40.0 | 18.812 | O | 1 |
| A10151 | 30.0 | 5.0 | 25.0 | 40.0 | 17.910 | O | 1 |
| A10152 | 20.0 | 15.0 | 25.0 | 40.0 | 14.901 | O | 1 |
| A10153 | 15.0 | 20.0 | 25.0 | 40.0 | 13.397 | O | 1 |
| A10154 | 10.0 | 25.0 | 25.0 | 40.0 | 11.893 | O | 1 |
| A10155 | 9.0 | 26.0 | 25.0 | 40.0 | 11.592 | O | 1 |
| A10156 | 8.0 | 27.0 | 25.0 | 40.0 | 11.291 | O | 1 |
| A10157 | 7.0 | 28.0 | 25.0 | 40.0 | 10.991 | O | 1 |
| A10158 | 6.0 | 29.0 | 25.0 | 40.0 | 10.690 | O | 1 |
| A10159 | 5.0 | 30.0 | 25.0 | 40.0 | 10.346 | O | 1 |
| A10160 | 4.0 | 31.0 | 25.0 | 40.0 | 9.992 | O | 1 |
| A10161 | 3.0 | 32.0 | 25.0 | 40.0 | 9.637 | O | 1 |
| A10162 | 2.0 | 33.0 | 25.0 | 40.0 | 9.282 | O | 1 |
| A10163 | 1.0 | 34.0 | 25.0 | 40.0 | 8.928 | O | 1 |
| A10164 | 0.0 | 35.0 | 25.0 | 40.0 | 8.573 | O | 1 |
| A10165 | 35.0 | 10.0 | 5.0 | 50.0 | 19.040 | X | 1 |
| A10166 | 34.9 | 10.1 | 5.0 | 50.0 | 19.010 | X | 1 |
| A10167 | 34.8 | 10.2 | 5.0 | 50.0 | 18.980 | O | 1 |
| A10168 | 34.0 | 11.0 | 5.0 | 50.0 | 18.740 | O | 1 |
| A10169 | 30.0 | 15.0 | 5.0 | 50.0 | 17.536 | O | 1 |
| A10170 | 20.0 | 25.0 | 5.0 | 50.0 | 14.528 | O | 1 |
| A10171 | 15.0 | 30.0 | 5.0 | 50.0 | 13.024 | O | 1 |
| A10172 | 10.0 | 35.0 | 5.0 | 50.0 | 11.520 | O | 1 |
| A10173 | 9.0 | 36.0 | 5.0 | 50.0 | 11.219 | O | 1 |
| A10174 | 8.0 | 37.0 | 5.0 | 50.0 | 10.918 | O | 1 |
| A10175 | 7.0 | 38.0 | 5.0 | 50.0 | 10.617 | O | 1 |
| A10176 | 6.0 | 39.0 | 5.0 | 50.0 | 10.316 | O | 1 |
| A10177 | 5.0 | 40.0 | 5.0 | 50.0 | 10.015 | O | 1 |
| A10178 | 4.0 | 41.0 | 5.0 | 50.0 | 9.677 | O | 1 |
| A10179 | 3.0 | 42.0 | 5.0 | 50.0 | 9.322 | O | 1 |
| A10180 | 2.0 | 43.0 | 5.0 | 50.0 | 8.967 | O | 1 |
| A10181 | 1.0 | 44.0 | 5.0 | 50.0 | 8.613 | O | 1 |
| A10182 | 0.0 | 45.0 | 5.0 | 50.0 | 8.258 | O | 1 |
| A10183 | 36.0 | 4.0 | 10.0 | 50.0 | 19.062 | X | 1 |
| A10184 | 35.8 | 4.2 | 10.0 | 50.0 | 19.001 | X | 1 |
| A10185 | 35.7 | 4.3 | 10.0 | 50.0 | 18.971 | O | 1 |
| A10186 | 35.0 | 5.0 | 10.0 | 50.0 | 18.761 | O | 1 |
| A10187 | 30.0 | 10.0 | 10.0 | 50.0 | 17.257 | O | 1 |
| A10188 | 20.0 | 20.0 | 10.0 | 50.0 | 14.248 | O | 1 |
| A10189 | 15.0 | 25.0 | 10.0 | 50.0 | 12.744 | O | 1 |
| A10190 | 10.0 | 30.0 | 10.0 | 50.0 | 11.240 | O | 1 |
| A10191 | 9.0 | 31.0 | 10.0 | 50.0 | 10.939 | O | 1 |
| A10192 | 8.0 | 32.0 | 10.0 | 50.0 | 10.638 | O | 1 |
| A10193 | 7.0 | 33.0 | 10.0 | 50.0 | 10.338 | O | 1 |
| A10194 | 6.0 | 34.0 | 10.0 | 50.0 | 10.037 | O | 1 |
| A10195 | 5.0 | 35.0 | 10.0 | 50.0 | 9.726 | O | 1 |
| A10196 | 4.0 | 36.0 | 10.0 | 50.0 | 9.371 | O | 1 |
| A10197 | 3.0 | 37.0 | 10.0 | 50.0 | 9.016 | O | 1 |
| A10198 | 2.0 | 38.0 | 10.0 | 50.0 | 8.662 | O | 1 |
| A10199 | 1.0 | 39.0 | 10.0 | 50.0 | 8.307 | O | 1 |
| A10200 | 0.0 | 40.0 | 10.0 | 50.0 | 7.952 | O | 1 |

Tables 420 to 428 show the composition, combustion heat amount, and GWP of the working medium of a four-component system of propane, HFO-1132(E), HFC-32, and $CO_2$.

[Table 420]

| Case | propane | HFO-1132(E) | HFC-32 | CO$_2$ | Heat of Combustion | Evaluation | GWP |
|---|---|---|---|---|---|---|---|
| A10201 | 11.0 | 85.0 | 2.0 | 2.0 | 19.101 | X | 15 |
| A10202 | 10.7 | 85.3 | 2.0 | 2.0 | 19.011 | X | 15 |
| A10203 | 10.6 | 85.4 | 2.0 | 2.0 | 18.981 | O | 15 |
| A10204 | 10.0 | 86.0 | 2.0 | 2.0 | 18.800 | O | 15 |
| A10205 | 9.0 | 87.0 | 2.0 | 2.0 | 18.499 | O | 15 |
| A10206 | 8.0 | 88.0 | 2.0 | 2.0 | 18.199 | O | 15 |
| A10207 | 7.0 | 89.0 | 2.0 | 2.0 | 17.898 | O | 15 |
| A10208 | 6.0 | 90.0 | 2.0 | 2.0 | 17.597 | O | 15 |
| A10209 | 5.0 | 91.0 | 2.0 | 2.0 | 17.296 | O | 15 |
| A10210 | 4.0 | 92.0 | 2.0 | 2.0 | 16.995 | O | 15 |
| A10211 | 3.0 | 93.0 | 2.0 | 2.0 | 16.694 | O | 15 |
| A10212 | 2.0 | 94.0 | 2.0 | 2.0 | 16.394 | O | 15 |
| A10213 | 1.0 | 95.0 | 2.0 | 2.0 | 16.093 | O | 15 |
| A10214 | 0.0 | 96.0 | 2.0 | 2.0 | 15.792 | O | 15 |
| A10215 | 12.0 | 81.0 | 5.0 | 2.0 | 19.201 | X | 35 |
| A10216 | 11.4 | 81.6 | 5.0 | 2.0 | 19.020 | X | 35 |
| A10217 | 11.3 | 81.7 | 5.0 | 2.0 | 18.990 | O | 35 |
| A10218 | 11.0 | 82.0 | 5.0 | 2.0 | 18.900 | O | 35 |
| A10219 | 10.0 | 83.0 | 5.0 | 2.0 | 18.599 | O | 35 |
| A10220 | 9.0 | 84.0 | 5.0 | 2.0 | 18.298 | O | 35 |
| A10221 | 8.0 | 85.0 | 5.0 | 2.0 | 17.998 | O | 35 |
| A10222 | 7.0 | 86.0 | 5.0 | 2.0 | 17.697 | O | 35 |
| A10223 | 6.0 | 87.0 | 5.0 | 2.0 | 17.396 | O | 35 |
| A10224 | 5.0 | 88.0 | 5.0 | 2.0 | 17.095 | O | 35 |
| A10225 | 4.0 | 89.0 | 5.0 | 2.0 | 16.794 | O | 35 |
| A10226 | 3.0 | 90.0 | 5.0 | 2.0 | 16.493 | O | 35 |
| A10227 | 2.0 | 91.0 | 5.0 | 2.0 | 16.193 | O | 35 |
| A10228 | 1.0 | 92.0 | 5.0 | 2.0 | 15.892 | O | 35 |
| A10229 | 0.0 | 93.0 | 5.0 | 2.0 | 15.591 | O | 35 |
| A10230 | 13.0 | 75.0 | 10.0 | 2.0 | 19.167 | X | 69 |
| A10231 | 12.5 | 75.5 | 10.0 | 2.0 | 19.016 | X | 69 |
| A10232 | 12.4 | 75.6 | 10.0 | 2.0 | 18.986 | O | 69 |
| A10233 | 12.0 | 76.0 | 10.0 | 2.0 | 18.866 | O | 69 |
| A10234 | 10.0 | 78.0 | 10.0 | 2.0 | 18.264 | O | 69 |
| A10235 | 9.0 | 79.0 | 10.0 | 2.0 | 17.963 | O | 69 |
| A10236 | 8.0 | 80.0 | 10.0 | 2.0 | 17.662 | O | 69 |
| A10237 | 7.0 | 81.0 | 10.0 | 2.0 | 17.362 | O | 69 |
| A10238 | 6.0 | 82.0 | 10.0 | 2.0 | 17.061 | O | 69 |
| A10239 | 5.0 | 83.0 | 10.0 | 2.0 | 16.760 | O | 69 |
| A10240 | 4.0 | 84.0 | 10.0 | 2.0 | 16.459 | O | 69 |
| A10241 | 3.0 | 85.0 | 10.0 | 2.0 | 16.158 | O | 69 |
| A10242 | 2.0 | 86.0 | 10.0 | 2.0 | 15.857 | O | 69 |
| A10243 | 1.0 | 87.0 | 10.0 | 2.0 | 15.557 | O | 69 |
| A10244 | 0.0 | 88.0 | 10.0 | 2.0 | 15.256 | O | 69 |
| A10245 | 14.0 | 69.0 | 15.0 | 2.0 | 19.132 | X | 102 |
| A10246 | 13.6 | 69.4 | 15.0 | 2.0 | 19.012 | X | 102 |
| A10247 | 13.5 | 69.5 | 15.0 | 2.0 | 18.982 | O | 102 |
| A10248 | 13.0 | 70.0 | 15.0 | 2.0 | 18.831 | O | 102 |
| A10249 | 10.0 | 73.0 | 15.0 | 2.0 | 17.929 | O | 102 |
| A10250 | 9.0 | 74.0 | 15.0 | 2.0 | 17.628 | O | 102 |

[Table 421]

| A10251 | 8.0 | 75.0 | 15.0 | 2.0 | 17.327 | O | 102 |
|---|---|---|---|---|---|---|---|
| A10252 | 7.0 | 76.0 | 15.0 | 2.0 | 17.026 | O | 102 |
| A10253 | 6.0 | 77.0 | 15.0 | 2.0 | 16.726 | O | 102 |
| A10254 | 5.0 | 78.0 | 15.0 | 2.0 | 16.425 | O | 102 |
| A10255 | 4.0 | 79.0 | 15.0 | 2.0 | 16.124 | O | 102 |
| A10256 | 3.0 | 80.0 | 15.0 | 2.0 | 15.823 | O | 102 |
| A10257 | 2.0 | 81.0 | 15.0 | 2.0 | 15.522 | O | 102 |
| A10258 | 1.0 | 82.0 | 15.0 | 2.0 | 15.221 | O | 102 |
| A10259 | 0.0 | 83.0 | 15.0 | 2.0 | 14.921 | O | 102 |
| A10260 | 15.0 | 63.0 | 20.0 | 2.0 | 19.098 | X | 136 |
| A10261 | 14.7 | 63.3 | 20.0 | 2.0 | 19.008 | X | 136 |
| A10262 | 14.6 | 63.4 | 20.0 | 2.0 | 18.978 | O | 136 |
| A10263 | 14.0 | 64.0 | 20.0 | 2.0 | 18.797 | O | 136 |
| A10264 | 10.0 | 68.0 | 20.0 | 2.0 | 17.594 | O | 136 |
| A10265 | 9.0 | 69.0 | 20.0 | 2.0 | 17.293 | O | 136 |
| A10266 | 8.0 | 70.0 | 20.0 | 2.0 | 16.992 | O | 136 |
| A10267 | 7.0 | 71.0 | 20.0 | 2.0 | 16.691 | O | 136 |
| A10268 | 6.0 | 72.0 | 20.0 | 2.0 | 16.390 | O | 136 |
| A10269 | 5.0 | 73.0 | 20.0 | 2.0 | 16.090 | O | 136 |
| A10270 | 4.0 | 74.0 | 20.0 | 2.0 | 15.789 | O | 136 |
| A10271 | 3.0 | 75.0 | 20.0 | 2.0 | 15.488 | O | 136 |
| A10272 | 2.0 | 76.0 | 20.0 | 2.0 | 15.187 | O | 136 |
| A10273 | 1.0 | 77.0 | 20.0 | 2.0 | 14.886 | O | 136 |
| A10274 | 0.0 | 78.0 | 20.0 | 2.0 | 14.585 | O | 136 |
| A10275 | 16.0 | 60.0 | 22.0 | 2.0 | 19.265 | X | 150 |
| A10276 | 15.2 | 60.8 | 22.0 | 2.0 | 19.024 | X | 150 |
| A10277 | 15.1 | 60.9 | 22.0 | 2.0 | 18.994 | O | 150 |
| A10278 | 15.0 | 61.0 | 22.0 | 2.0 | 18.964 | O | 150 |
| A10279 | 10.0 | 66.0 | 22.0 | 2.0 | 17.460 | O | 150 |
| A10280 | 9.0 | 67.0 | 22.0 | 2.0 | 17.159 | O | 150 |
| A10281 | 8.0 | 68.0 | 22.0 | 2.0 | 16.858 | O | 150 |
| A10282 | 7.0 | 69.0 | 22.0 | 2.0 | 16.557 | O | 150 |
| A10283 | 6.0 | 70.0 | 22.0 | 2.0 | 16.256 | O | 150 |
| A10284 | 5.0 | 71.0 | 22.0 | 2.0 | 15.955 | O | 150 |
| A10285 | 4.0 | 72.0 | 22.0 | 2.0 | 15.655 | O | 150 |
| A10286 | 3.0 | 73.0 | 22.0 | 2.0 | 15.354 | O | 150 |
| A10287 | 2.0 | 74.0 | 22.0 | 2.0 | 15.053 | O | 150 |
| A10288 | 1.0 | 75.0 | 22.0 | 2.0 | 14.752 | O | 150 |
| A10289 | 0.0 | 76.0 | 22.0 | 2.0 | 14.451 | O | 150 |
| A10290 | 12.0 | 82.0 | 2.0 | 4.0 | 19.077 | X | 15 |
| A10291 | 11.8 | 82.2 | 2.0 | 4.0 | 19.017 | X | 15 |
| A10292 | 11.7 | 82.3 | 2.0 | 4.0 | 18.987 | O | 15 |
| A10293 | 11.0 | 83.0 | 2.0 | 4.0 | 18.776 | O | 15 |
| A10294 | 10.0 | 84.0 | 2.0 | 4.0 | 18.475 | O | 15 |
| A10295 | 9.0 | 85.0 | 2.0 | 4.0 | 18.174 | O | 15 |
| A10296 | 8.0 | 86.0 | 2.0 | 4.0 | 17.874 | O | 15 |
| A10297 | 7.0 | 87.0 | 2.0 | 4.0 | 17.573 | O | 15 |
| A10298 | 6.0 | 88.0 | 2.0 | 4.0 | 17.272 | O | 15 |
| A10299 | 5.0 | 89.0 | 2.0 | 4.0 | 16.971 | O | 15 |
| A10300 | 4.0 | 90.0 | 2.0 | 4.0 | 16.670 | O | 15 |

[Table 422]

| A10301 | 3.0 | 91.0 | 2.0 | 4.0 | 16.369 | O | 15 |
|---|---|---|---|---|---|---|---|
| A10302 | 2.0 | 92.0 | 2.0 | 4.0 | 16.069 | O | 15 |
| A10303 | 1.0 | 93.0 | 2.0 | 4.0 | 15.768 | O | 15 |
| A10304 | 0.0 | 94.0 | 2.0 | 4.0 | 15.467 | O | 15 |
| A10305 | 13.0 | 78.0 | 5.0 | 4.0 | 19.177 | X | 35 |
| A10306 | 12.5 | 78.5 | 5.0 | 4.0 | 19.026 | X | 35 |
| A10307 | 12.4 | 78.6 | 5.0 | 4.0 | 18.996 | O | 35 |
| A10308 | 12.0 | 79.0 | 5.0 | 4.0 | 18.876 | O | 35 |
| A10309 | 10.0 | 81.0 | 5.0 | 4.0 | 18.274 | O | 35 |
| A10310 | 9.0 | 82.0 | 5.0 | 4.0 | 17.973 | O | 35 |
| A10311 | 8.0 | 83.0 | 5.0 | 4.0 | 17.673 | O | 35 |
| A10312 | 7.0 | 84.0 | 5.0 | 4.0 | 17.372 | O | 35 |
| A10313 | 6.0 | 85.0 | 5.0 | 4.0 | 17.071 | O | 35 |
| A10314 | 5.0 | 86.0 | 5.0 | 4.0 | 16.770 | O | 35 |
| A10315 | 4.0 | 87.0 | 5.0 | 4.0 | 16.469 | O | 35 |
| A10316 | 3.0 | 88.0 | 5.0 | 4.0 | 16.168 | O | 35 |
| A10317 | 2.0 | 89.0 | 5.0 | 4.0 | 15.868 | O | 35 |
| A10318 | 1.0 | 90.0 | 5.0 | 4.0 | 15.567 | O | 35 |
| A10319 | 0.0 | 91.0 | 5.0 | 4.0 | 15.266 | O | 35 |
| A10320 | 14.0 | 72.0 | 10.0 | 4.0 | 19.142 | X | 69 |
| A10321 | 13.6 | 72.4 | 10.0 | 4.0 | 19.022 | X | 69 |
| A10322 | 13.5 | 72.5 | 10.0 | 4.0 | 18.992 | O | 69 |
| A10323 | 12.0 | 74.0 | 10.0 | 4.0 | 18.541 | O | 69 |
| A10324 | 10.0 | 76.0 | 10.0 | 4.0 | 17.939 | O | 69 |
| A10325 | 9.0 | 77.0 | 10.0 | 4.0 | 17.638 | O | 69 |
| A10326 | 8.0 | 78.0 | 10.0 | 4.0 | 17.337 | O | 69 |
| A10327 | 7.0 | 79.0 | 10.0 | 4.0 | 17.037 | O | 69 |
| A10328 | 6.0 | 80.0 | 10.0 | 4.0 | 16.736 | O | 69 |
| A10329 | 5.0 | 81.0 | 10.0 | 4.0 | 16.435 | O | 69 |
| A10330 | 4.0 | 82.0 | 10.0 | 4.0 | 16.134 | O | 69 |
| A10331 | 3.0 | 83.0 | 10.0 | 4.0 | 15.833 | O | 69 |
| A10332 | 2.0 | 84.0 | 10.0 | 4.0 | 15.532 | O | 69 |
| A10333 | 1.0 | 85.0 | 10.0 | 4.0 | 15.232 | O | 69 |
| A10334 | 0.0 | 86.0 | 10.0 | 4.0 | 14.931 | O | 69 |
| A10335 | 15.0 | 66.0 | 15.0 | 4.0 | 19.108 | X | 102 |
| A10336 | 14.7 | 66.3 | 15.0 | 4.0 | 19.018 | X | 102 |
| A10337 | 14.6 | 66.4 | 15.0 | 4.0 | 18.988 | O | 102 |
| A10338 | 14.0 | 67.0 | 15.0 | 4.0 | 18.807 | O | 102 |
| A10339 | 10.0 | 71.0 | 15.0 | 4.0 | 17.604 | O | 102 |
| A10340 | 9.0 | 72.0 | 15.0 | 4.0 | 17.303 | O | 102 |
| A10341 | 8.0 | 73.0 | 15.0 | 4.0 | 17.002 | O | 102 |
| A10342 | 7.0 | 74.0 | 15.0 | 4.0 | 16.701 | O | 102 |
| A10343 | 6.0 | 75.0 | 15.0 | 4.0 | 16.401 | O | 102 |
| A10344 | 5.0 | 76.0 | 15.0 | 4.0 | 16.100 | O | 102 |
| A10345 | 4.0 | 77.0 | 15.0 | 4.0 | 15.799 | O | 102 |
| A10346 | 3.0 | 78.0 | 15.0 | 4.0 | 15.498 | O | 102 |
| A10347 | 2.0 | 79.0 | 15.0 | 4.0 | 15.197 | O | 102 |
| A10348 | 1.0 | 80.0 | 15.0 | 4.0 | 14.896 | O | 102 |
| A10349 | 0.0 | 81.0 | 15.0 | 4.0 | 14.596 | O | 102 |
| A10350 | 16.0 | 60.0 | 20.0 | 4.0 | 19.074 | X | 136 |

[Table 423]

| A10351 | 15.8 | 60.2 | 20.0 | 4.0 | 19.013 | X | 136 |
|---|---|---|---|---|---|---|---|
| A10352 | 15.7 | 60.3 | 20.0 | 4.0 | 18.983 | O | 136 |
| A10353 | 15.0 | 61.0 | 20.0 | 4.0 | 18.773 | O | 136 |
| A10354 | 10.0 | 66.0 | 20.0 | 4.0 | 17.269 | O | 136 |
| A10355 | 9.0 | 67.0 | 20.0 | 4.0 | 16.968 | O | 136 |
| A10356 | 8.0 | 68.0 | 20.0 | 4.0 | 16.667 | O | 136 |
| A10357 | 7.0 | 69.0 | 20.0 | 4.0 | 16.366 | O | 136 |
| A10358 | 6.0 | 70.0 | 20.0 | 4.0 | 16.065 | O | 136 |
| A10359 | 5.0 | 71.0 | 20.0 | 4.0 | 15.765 | O | 136 |
| A10360 | 4.0 | 72.0 | 20.0 | 4.0 | 15.464 | O | 136 |
| A10361 | 3.0 | 73.0 | 20.0 | 4.0 | 15.163 | O | 136 |
| A10362 | 2.0 | 74.0 | 20.0 | 4.0 | 14.862 | O | 136 |
| A10363 | 1.0 | 75.0 | 20.0 | 4.0 | 14.561 | O | 136 |
| A10364 | 0.0 | 76.0 | 20.0 | 4.0 | 14.260 | O | 136 |
| A10365 | 17.0 | 57.0 | 22.0 | 4.0 | 19.240 | X | 150 |
| A10366 | 16.2 | 57.8 | 22.0 | 4.0 | 19.000 | **X** | 150 |
| A10367 | 16.1 | 57.9 | 22.0 | 4.0 | 18.970 | O | 150 |
| A10368 | 16.0 | 58.0 | 22.0 | 4.0 | 18.940 | O | 150 |
| A10369 | 10.0 | 64.0 | 22.0 | 4.0 | 17.135 | O | 150 |
| A10370 | 9.0 | 65.0 | 22.0 | 4.0 | 16.834 | O | 150 |
| A10371 | 8.0 | 66.0 | 22.0 | 4.0 | 16.533 | O | 150 |
| A10372 | 7.0 | 67.0 | 22.0 | 4.0 | 16.232 | O | 150 |
| A10373 | 6.0 | 68.0 | 22.0 | 4.0 | 15.931 | O | 150 |
| A10374 | 5.0 | 69.0 | 22.0 | 4.0 | 15.630 | O | 150 |
| A10375 | 4.0 | 70.0 | 22.0 | 4.0 | 15.330 | O | 150 |
| A10376 | 3.0 | 71.0 | 22.0 | 4.0 | 15.029 | O | 150 |
| A10377 | 2.0 | 72.0 | 22.0 | 4.0 | 14.728 | O | 150 |
| A10378 | 1.0 | 73.0 | 22.0 | 4.0 | 14.427 | O | 150 |
| A10379 | 0.0 | 74.0 | 22.0 | 4.0 | 14.126 | O | 150 |
| A10380 | 13.0 | 79.0 | 2.0 | 6.0 | 19.053 | X | 15 |
| A10381 | 12.9 | 79.1 | 2.0 | 6.0 | 19.023 | X | 15 |
| A10382 | 12.8 | 79.2 | 2.0 | 6.0 | 18.993 | O | 15 |
| A10383 | 12.0 | 80.0 | 2.0 | 6.0 | 18.752 | O | 15 |
| A10384 | 10.0 | 82.0 | 2.0 | 6.0 | 18.150 | O | 15 |
| A10385 | 9.0 | 83.0 | 2.0 | 6.0 | 17.849 | O | 15 |
| A10386 | 8.0 | 84.0 | 2.0 | 6.0 | 17.549 | O | 15 |
| A10387 | 7.0 | 85.0 | 2.0 | 6.0 | 17.248 | O | 15 |
| A10388 | 6.0 | 86.0 | 2.0 | 6.0 | 16.947 | O | 15 |
| A10389 | 5.0 | 87.0 | 2.0 | 6.0 | 16.646 | O | 15 |
| A10390 | 4.0 | 88.0 | 2.0 | 6.0 | 16.345 | O | 15 |
| A10391 | 3.0 | 89.0 | 2.0 | 6.0 | 16.044 | O | 15 |
| A10392 | 2.0 | 90.0 | 2.0 | 6.0 | 15.744 | O | 15 |
| A10393 | 1.0 | 91.0 | 2.0 | 6.0 | 15.443 | O | 15 |
| A10394 | 0.0 | 92.0 | 2.0 | 6.0 | 15.142 | O | 15 |
| A10395 | 14.0 | 75.0 | 5.0 | 6.0 | 19.152 | X | 35 |
| A10396 | 13.5 | 75.5 | 5.0 | 6.0 | 19.002 | X | 35 |
| A10397 | 13.4 | 75.6 | 5.0 | 6.0 | 18.972 | O | 35 |
| A10398 | 13.0 | 76.0 | 5.0 | 6.0 | 18.852 | O | 35 |
| A10399 | 10.0 | 79.0 | 5.0 | 6.0 | 17.949 | O | 35 |
| A10400 | 9.0 | 80.0 | 5.0 | 6.0 | 17.648 | O | 35 |

[Table 424]

| | | | | | | | |
|---|---|---|---|---|---|---|---|
| A10401 | 8.0 | 81.0 | 5.0 | 6.0 | 17.348 | O | 35 |
| A10402 | 7.0 | 82.0 | 5.0 | 6.0 | 17.047 | O | 35 |
| A10403 | 6.0 | 83.0 | 5.0 | 6.0 | 16.746 | O | 35 |
| A10404 | 5.0 | 84.0 | 5.0 | 6.0 | 16.445 | O | 35 |
| A10405 | 4.0 | 85.0 | 5.0 | 6.0 | 16.144 | O | 35 |
| A10406 | 3.0 | 86.0 | 5.0 | 6.0 | 15.843 | O | 35 |
| A10407 | 2.0 | 87.0 | 5.0 | 6.0 | 15.543 | O | 35 |
| A10408 | 1.0 | 88.0 | 5.0 | 6.0 | 15.242 | O | 35 |
| A10409 | 0.0 | 89.0 | 5.0 | 6.0 | 14.941 | O | 35 |
| A10410 | 15.0 | 69.0 | 10.0 | 6.0 | 19.118 | X | 69 |
| A10411 | 14.7 | 69.3 | 10.0 | 6.0 | 19.028 | X | 69 |
| A10412 | 14.6 | 69.4 | 10.0 | 6.0 | 18.998 | O | 69 |
| A10413 | 14.0 | 70.0 | 10.0 | 6.0 | 18.817 | O | 69 |
| A10414 | 10.0 | 74.0 | 10.0 | 6.0 | 17.614 | O | 69 |
| A10415 | 9.0 | 75.0 | 10.0 | 6.0 | 17.313 | O | 69 |
| A10416 | 8.0 | 76.0 | 10.0 | 6.0 | 17.012 | O | 69 |
| A10417 | 7.0 | 77.0 | 10.0 | 6.0 | 16.712 | O | 69 |
| A10418 | 6.0 | 78.0 | 10.0 | 6.0 | 16.411 | O | 69 |
| A10419 | 5.0 | 79.0 | 10.0 | 6.0 | 16.110 | O | 69 |
| A10420 | 4.0 | 80.0 | 10.0 | 6.0 | 15.809 | O | 69 |
| A10421 | 3.0 | 81.0 | 10.0 | 6.0 | 15.508 | O | 69 |
| A10422 | 2.0 | 82.0 | 10.0 | 6.0 | 15.207 | O | 69 |
| A10423 | 1.0 | 83.0 | 10.0 | 6.0 | 14.907 | O | 69 |
| A10424 | 0.0 | 84.0 | 10.0 | 6.0 | 14.606 | O | 69 |
| A10425 | 16.0 | 63.0 | 15.0 | 6.0 | 19.084 | X | 102 |
| A10426 | 15.8 | 63.2 | 15.0 | 6.0 | 19.024 | X | 102 |
| A10427 | 15.7 | 63.3 | 15.0 | 6.0 | 18.994 | O | 102 |
| A10428 | 15.0 | 64.0 | 15.0 | 6.0 | 18.783 | O | 102 |
| A10429 | 10.0 | 69.0 | 15.0 | 6.0 | 17.279 | O | 102 |
| A10430 | 9.0 | 70.0 | 15.0 | 6.0 | 16.978 | O | 102 |
| A10431 | 8.0 | 71.0 | 15.0 | 6.0 | 16.677 | O | 102 |
| A10432 | 7.0 | 72.0 | 15.0 | 6.0 | 16.376 | O | 102 |
| A10433 | 6.0 | 73.0 | 15.0 | 6.0 | 16.076 | O | 102 |
| A10434 | 5.0 | 74.0 | 15.0 | 6.0 | 15.775 | O | 102 |
| A10435 | 4.0 | 75.0 | 15.0 | 6.0 | 15.474 | O | 102 |
| A10436 | 3.0 | 76.0 | 15.0 | 6.0 | 15.173 | O | 102 |
| A10437 | 2.0 | 77.0 | 15.0 | 6.0 | 14.872 | O | 102 |
| A10438 | 1.0 | 78.0 | 15.0 | 6.0 | 14.571 | O | 102 |
| A10439 | 0.0 | 79.0 | 15.0 | 6.0 | 14.271 | O | 102 |
| A10440 | 17.0 | 57.0 | 20.0 | 6.0 | 19.049 | X | 136 |
| A10441 | 16.9 | 57.1 | 20.0 | 6.0 | 19.019 | X | 136 |
| A10442 | 16.8 | 57.2 | 20.0 | 6.0 | 18.989 | O | 136 |
| A10443 | 16.0 | 58.0 | 20.0 | 6.0 | 18.749 | O | 136 |
| A10444 | 15.0 | 59.0 | 20.0 | 6.0 | 18.448 | O | 136 |
| A10445 | 10.0 | 64.0 | 20.0 | 6.0 | 16.944 | O | 136 |
| A10446 | 9.0 | 65.0 | 20.0 | 6.0 | 16.643 | O | 136 |
| A10447 | 8.0 | 66.0 | 20.0 | 6.0 | 16.342 | O | 136 |
| A10448 | 7.0 | 67.0 | 20.0 | 6.0 | 16.041 | O | 136 |
| A10449 | 6.0 | 68.0 | 20.0 | 6.0 | 15.740 | O | 136 |
| A10450 | 5.0 | 69.0 | 20.0 | 6.0 | 15.440 | O | 136 |

[Table 425]

| | | | | | | | |
|---|---|---|---|---|---|---|---|
| A10451 | 4.0 | 70.0 | 20.0 | 6.0 | 15.139 | O | 136 |
| A10452 | 3.0 | 71.0 | 20.0 | 6.0 | 14.838 | O | 136 |
| A10453 | 2.0 | 72.0 | 20.0 | 6.0 | 14.537 | O | 136 |
| A10454 | 1.0 | 73.0 | 20.0 | 6.0 | 14.236 | O | 136 |
| A10455 | 0.0 | 74.0 | 20.0 | 6.0 | 13.935 | O | 136 |
| A10456 | 18.0 | 54.0 | 22.0 | 6.0 | 19.216 | X | 150 |
| A10457 | 17.3 | 54.7 | 22.0 | 6.0 | 19.006 | X | 150 |
| A10458 | 17.2 | 54.8 | 22.0 | 6.0 | 18.976 | O | 150 |
| A10459 | 17.0 | 55.0 | 22.0 | 6.0 | 18.915 | O | 150 |
| A10460 | 10.0 | 62.0 | 22.0 | 6.0 | 16.810 | O | 150 |
| A10461 | 9.0 | 63.0 | 22.0 | 6.0 | 16.509 | O | 150 |
| A10462 | 8.0 | 64.0 | 22.0 | 6.0 | 16.208 | O | 150 |
| A10463 | 7.0 | 65.0 | 22.0 | 6.0 | 15.907 | O | 150 |
| A10464 | 6.0 | 66.0 | 22.0 | 6.0 | 15.606 | O | 150 |
| A10465 | 5.0 | 67.0 | 22.0 | 6.0 | 15.305 | O | 150 |
| A10466 | 4.0 | 68.0 | 22.0 | 6.0 | 15.005 | O | 150 |
| A10467 | 3.0 | 69.0 | 22.0 | 6.0 | 14.704 | O | 150 |
| A10468 | 2.0 | 70.0 | 22.0 | 6.0 | 14.403 | O | 150 |
| A10469 | 1.0 | 71.0 | 22.0 | 6.0 | 14.102 | O | 150 |
| A10470 | 0.0 | 72.0 | 22.0 | 6.0 | 13.801 | O | 150 |
| A10471 | 14.0 | 76.0 | 2.0 | 8.0 | 19.029 | X | 15 |
| A10472 | 13.9 | 76.1 | 2.0 | 8.0 | 18.998 | O | 15 |
| A10473 | 13.0 | 77.0 | 2.0 | 8.0 | 18.728 | O | 15 |
| A10474 | 10.0 | 80.0 | 2.0 | 8.0 | 17.825 | O | 15 |
| A10475 | 9.0 | 81.0 | 2.0 | 8.0 | 17.524 | O | 15 |
| A10476 | 8.0 | 82.0 | 2.0 | 8.0 | 17.224 | O | 15 |
| A10477 | 7.0 | 83.0 | 2.0 | 8.0 | 16.923 | O | 15 |
| A10478 | 6.0 | 84.0 | 2.0 | 8.0 | 16.622 | O | 15 |
| A10479 | 5.0 | 85.0 | 2.0 | 8.0 | 16.321 | O | 15 |
| A10480 | 4.0 | 86.0 | 2.0 | 8.0 | 16.020 | O | 15 |
| A10481 | 3.0 | 87.0 | 2.0 | 8.0 | 15.719 | O | 15 |
| A10482 | 2.0 | 88.0 | 2.0 | 8.0 | 15.419 | O | 15 |
| A10483 | 1.0 | 89.0 | 2.0 | 8.0 | 15.118 | O | 15 |
| A10484 | 0.0 | 90.0 | 2.0 | 8.0 | 14.817 | O | 15 |
| A10485 | 15.0 | 72.0 | 5.0 | 8.0 | 19.128 | X | 35 |
| A10486 | 14.6 | 72.4 | 5.0 | 8.0 | 19.008 | X | 35 |
| A10487 | 14.5 | 72.5 | 5.0 | 8.0 | 18.978 | O | 35 |
| A10488 | 14.0 | 73.0 | 5.0 | 8.0 | 18.827 | O | 35 |
| A10489 | 10.0 | 77.0 | 5.0 | 8.0 | 17.624 | O | 35 |
| A10490 | 9.0 | 78.0 | 5.0 | 8.0 | 17.323 | O | 35 |
| A10491 | 8.0 | 79.0 | 5.0 | 8.0 | 17.022 | O | 35 |
| A10492 | 7.0 | 80.0 | 5.0 | 8.0 | 16.722 | O | 35 |
| A10493 | 6.0 | 81.0 | 5.0 | 8.0 | 16.421 | O | 35 |
| A10494 | 5.0 | 82.0 | 5.0 | 8.0 | 16.120 | O | 35 |
| A10495 | 4.0 | 83.0 | 5.0 | 8.0 | 15.819 | O | 35 |
| A10496 | 3.0 | 84.0 | 5.0 | 8.0 | 15.518 | O | 35 |
| A10497 | 2.0 | 85.0 | 5.0 | 8.0 | 15.217 | O | 35 |
| A10498 | 1.0 | 86.0 | 5.0 | 8.0 | 14.917 | O | 35 |
| A10499 | 0.0 | 87.0 | 5.0 | 8.0 | 14.616 | O | 35 |
| A10500 | 16.0 | 66.0 | 10.0 | 8.0 | 19.094 | X | 69 |

[Table 426]

| | | | | | | | |
|---|---|---|---|---|---|---|---|
| A10501 | 15.7 | 66.3 | 10.0 | 8.0 | 19.004 | X | 69 |
| A10502 | 15.6 | 66.4 | 10.0 | 8.0 | 18.974 | O | 69 |
| A10503 | 15.0 | 67.0 | 10.0 | 8.0 | 18.793 | O | 69 |
| A10504 | 10.0 | 72.0 | 10.0 | 8.0 | 17.289 | O | 69 |
| A10505 | 9.0 | 73.0 | 10.0 | 8.0 | 16.988 | O | 69 |
| A10506 | 8.0 | 74.0 | 10.0 | 8.0 | 16.687 | O | 69 |
| A10507 | 7.0 | 75.0 | 10.0 | 8.0 | 16.386 | O | 69 |
| A10508 | 6.0 | 76.0 | 10.0 | 8.0 | 16.086 | O | 69 |
| A10509 | 5.0 | 77.0 | 10.0 | 8.0 | 15.785 | O | 69 |
| A10510 | 4.0 | 78.0 | 10.0 | 8.0 | 15.484 | O | 69 |
| A10511 | 3.0 | 79.0 | 10.0 | 8.0 | 15.183 | O | 69 |
| A10512 | 2.0 | 80.0 | 10.0 | 8.0 | 14.882 | O | 69 |
| A10513 | 1.0 | 81.0 | 10.0 | 8.0 | 14.581 | O | 69 |
| A10514 | 0.0 | 82.0 | 10.0 | 8.0 | 14.281 | O | 69 |
| A10515 | 17.0 | 60.0 | 15.0 | 8.0 | 19.060 | X | 102 |
| A10516 | 16.9 | 60.1 | 15.0 | 8.0 | 19.030 | X | 102 |
| A10517 | 16.8 | 60.2 | 15.0 | 8.0 | 18.999 | O | 102 |
| A10518 | 16.0 | 61.0 | 15.0 | 8.0 | 18.759 | O | 102 |
| A10519 | 15.0 | 62.0 | 15.0 | 8.0 | 18.458 | O | 102 |
| A10520 | 10.0 | 67.0 | 15.0 | 8.0 | 16.954 | O | 102 |
| A10521 | 9.0 | 68.0 | 15.0 | 8.0 | 16.653 | O | 102 |
| A10522 | 8.0 | 69.0 | 15.0 | 8.0 | 16.352 | O | 102 |
| A10523 | 7.0 | 70.0 | 15.0 | 8.0 | 16.051 | O | 102 |
| A10524 | 6.0 | 71.0 | 15.0 | 8.0 | 15.750 | O | 102 |
| A10525 | 5.0 | 72.0 | 15.0 | 8.0 | 15.450 | O | 102 |
| A10526 | 4.0 | 73.0 | 15.0 | 8.0 | 15.149 | O | 102 |
| A10527 | 3.0 | 74.0 | 15.0 | 8.0 | 14.848 | O | 102 |
| A10528 | 2.0 | 75.0 | 15.0 | 8.0 | 14.547 | O | 102 |
| A10529 | 1.0 | 76.0 | 15.0 | 8.0 | 14.246 | O | 102 |
| A10530 | 0.0 | 77.0 | 15.0 | 8.0 | 13.945 | O | 102 |
| A10531 | 18.0 | 54.0 | 20.0 | 8.0 | 19.025 | X | 136 |
| A10532 | 17.9 | 54.1 | 20.0 | 8.0 | 18.995 | O | 136 |
| A10533 | 17.0 | 55.0 | 20.0 | 8.0 | 18.724 | O | 136 |
| A10534 | 15.0 | 57.0 | 20.0 | 8.0 | 18.123 | O | 136 |
| A10535 | 10.0 | 62.0 | 20.0 | 8.0 | 16.619 | O | 136 |
| A10536 | 9.0 | 63.0 | 20.0 | 8.0 | 16.318 | O | 136 |
| A10537 | 8.0 | 64.0 | 20.0 | 8.0 | 16.017 | O | 136 |
| A10538 | 7.0 | 65.0 | 20.0 | 8.0 | 15.716 | O | 136 |
| A10539 | 6.0 | 66.0 | 20.0 | 8.0 | 15.415 | O | 136 |
| A10540 | 5.0 | 67.0 | 20.0 | 8.0 | 15.114 | O | 136 |
| A10541 | 4.0 | 68.0 | 20.0 | 8.0 | 14.814 | O | 136 |
| A10542 | 3.0 | 69.0 | 20.0 | 8.0 | 14.513 | O | 136 |
| A10543 | 2.0 | 70.0 | 20.0 | 8.0 | 14.212 | O | 136 |
| A10544 | 1.0 | 71.0 | 20.0 | 8.0 | 13.911 | O | 136 |
| A10545 | 0.0 | 72.0 | 20.0 | 8.0 | 13.610 | O | 136 |
| A10546 | 19.0 | 51.0 | 22.0 | 8.0 | 19.192 | X | 150 |
| A10547 | 18.4 | 51.6 | 22.0 | 8.0 | 19.012 | X | 150 |
| A10548 | 18.3 | 51.7 | 22.0 | 8.0 | 18.981 | O | 150 |
| A10549 | 18.0 | 52.0 | 22.0 | 8.0 | 18.891 | O | 150 |
| A10550 | 15.0 | 55.0 | 22.0 | 8.0 | 17.989 | O | 150 |

[Table 427]

| | | | | | | | |
|---|---|---|---|---|---|---|---|
| A10551 | 10.0 | 60.0 | 22.0 | 8.0 | 16.485 | O | 150 |
| A10552 | 9.0 | 61.0 | 22.0 | 8.0 | 16.184 | O | 150 |
| A10553 | 8.0 | 62.0 | 22.0 | 8.0 | 15.883 | O | 150 |
| A10554 | 7.0 | 63.0 | 22.0 | 8.0 | 15.582 | O | 150 |
| A10555 | 6.0 | 64.0 | 22.0 | 8.0 | 15.281 | O | 150 |
| A10556 | 5.0 | 65.0 | 22.0 | 8.0 | 14.980 | O | 150 |
| A10557 | 4.0 | 66.0 | 22.0 | 8.0 | 14.680 | O | 150 |
| A10558 | 3.0 | 67.0 | 22.0 | 8.0 | 14.379 | O | 150 |
| A10559 | 2.0 | 68.0 | 22.0 | 8.0 | 14.078 | O | 150 |
| A10560 | 1.0 | 69.0 | 22.0 | 8.0 | 13.777 | O | 150 |
| A10561 | 0.0 | 70.0 | 22.0 | 8.0 | 13.476 | O | 150 |
| A10562 | 15.0 | 73.0 | 2.0 | 10.0 | 19.004 | X | 15 |
| A10563 | 14.9 | 73.1 | 2.0 | 10.0 | 18.974 | O | 15 |
| A10564 | 14.0 | 74.0 | 2.0 | 10.0 | 18.704 | O | 15 |
| A10565 | 10.0 | 78.0 | 2.0 | 10.0 | 17.500 | O | 15 |
| A10566 | 9.0 | 79.0 | 2.0 | 10.0 | 17.199 | O | 15 |
| A10567 | 8.0 | 80.0 | 2.0 | 10.0 | 16.899 | O | 15 |
| A10568 | 7.0 | 81.0 | 2.0 | 10.0 | 16.598 | O | 15 |
| A10569 | 6.0 | 82.0 | 2.0 | 10.0 | 16.297 | O | 15 |
| A10570 | 5.0 | 83.0 | 2.0 | 10.0 | 15.996 | O | 15 |
| A10571 | 4.0 | 84.0 | 2.0 | 10.0 | 15.695 | O | 15 |
| A10572 | 3.0 | 85.0 | 2.0 | 10.0 | 15.394 | O | 15 |
| A10573 | 2.0 | 86.0 | 2.0 | 10.0 | 15.094 | O | 15 |
| A10574 | 1.0 | 87.0 | 2.0 | 10.0 | 14.793 | O | 15 |
| A10575 | 0.0 | 88.0 | 2.0 | 10.0 | 14.492 | O | 15 |
| A10576 | 16.0 | 69.0 | 5.0 | 10.0 | 19.104 | X | 35 |
| A10577 | 15.7 | 69.3 | 5.0 | 10.0 | 19.014 | X | 35 |
| A10578 | 15.6 | 69.4 | 5.0 | 10.0 | 18.984 | O | 35 |
| A10579 | 15.0 | 70.0 | 5.0 | 10.0 | 18.803 | O | 35 |
| A10580 | 10.0 | 75.0 | 5.0 | 10.0 | 17.299 | O | 35 |
| A10581 | 9.0 | 76.0 | 5.0 | 10.0 | 16.998 | O | 35 |
| A10582 | 8.0 | 77.0 | 5.0 | 10.0 | 16.697 | O | 35 |
| A10583 | 7.0 | 78.0 | 5.0 | 10.0 | 16.397 | O | 35 |
| A10584 | 6.0 | 79.0 | 5.0 | 10.0 | 16.096 | O | 35 |
| A10585 | 5.0 | 80.0 | 5.0 | 10.0 | 15.795 | O | 35 |
| A10586 | 4.0 | 81.0 | 5.0 | 10.0 | 15.494 | O | 35 |
| A10587 | 3.0 | 82.0 | 5.0 | 10.0 | 15.193 | O | 35 |
| A10588 | 2.0 | 83.0 | 5.0 | 10.0 | 14.892 | O | 35 |
| A10589 | 1.0 | 84.0 | 5.0 | 10.0 | 14.592 | O | 35 |
| A10590 | 0.0 | 85.0 | 5.0 | 10.0 | 14.291 | O | 35 |
| A10591 | 17.0 | 63.0 | 10.0 | 10.0 | 19.070 | X | 69 |
| A10592 | 16.8 | 63.2 | 10.0 | 10.0 | 19.010 | X | 69 |
| A10593 | 16.7 | 63.3 | 10.0 | 10.0 | 18.980 | O | 69 |
| A10594 | 16.0 | 64.0 | 10.0 | 10.0 | 18.769 | O | 69 |
| A10595 | 15.0 | 65.0 | 10.0 | 10.0 | 18.468 | O | 69 |
| A10596 | 10.0 | 70.0 | 10.0 | 10.0 | 16.964 | O | 69 |
| A10597 | 9.0 | 71.0 | 10.0 | 10.0 | 16.663 | O | 69 |
| A10598 | 8.0 | 72.0 | 10.0 | 10.0 | 16.362 | O | 69 |
| A10599 | 7.0 | 73.0 | 10.0 | 10.0 | 16.061 | O | 69 |
| A10600 | 6.0 | 74.0 | 10.0 | 10.0 | 15.761 | O | 69 |

[Table 428]

| A10601 | 5.0 | 75.0 | 10.0 | 10.0 | 15.460 | O | 69 |
|--------|-----|------|------|------|--------|---|-----|
| A10602 | 4.0 | 76.0 | 10.0 | 10.0 | 15.159 | O | 69 |
| A10603 | 3.0 | 77.0 | 10.0 | 10.0 | 14.858 | O | 69 |
| A10604 | 2.0 | 78.0 | 10.0 | 10.0 | 14.557 | O | 69 |
| A10605 | 1.0 | 79.0 | 10.0 | 10.0 | 14.256 | O | 69 |
| A10606 | 0.0 | 80.0 | 10.0 | 10.0 | 13.956 | O | 69 |
| A10607 | 18.0 | 57.0 | 15.0 | 10.0 | 19.035 | X | 102 |
| A10608 | 17.9 | 57.1 | 15.0 | 10.0 | 19.005 | X | 102 |
| A10609 | 17.8 | 57.2 | 15.0 | 10.0 | 18.975 | O | 102 |
| A10610 | 17.0 | 58.0 | 15.0 | 10.0 | 18.735 | O | 102 |
| A10611 | 15.0 | 60.0 | 15.0 | 10.0 | 18.133 | O | 102 |
| A10612 | 10.0 | 65.0 | 15.0 | 10.0 | 16.629 | O | 102 |
| A10613 | 9.0 | 66.0 | 15.0 | 10.0 | 16.328 | O | 102 |
| A10614 | 8.0 | 67.0 | 15.0 | 10.0 | 16.027 | O | 102 |
| A10615 | 7.0 | 68.0 | 15.0 | 10.0 | 15.726 | O | 102 |
| A10616 | 6.0 | 69.0 | 15.0 | 10.0 | 15.425 | O | 102 |
| A10617 | 5.0 | 70.0 | 15.0 | 10.0 | 15.125 | O | 102 |
| A10618 | 4.0 | 71.0 | 15.0 | 10.0 | 14.824 | O | 102 |
| A10619 | 3.0 | 72.0 | 15.0 | 10.0 | 14.523 | O | 102 |
| A10620 | 2.0 | 73.0 | 15.0 | 10.0 | 14.222 | O | 102 |
| A10621 | 1.0 | 74.0 | 15.0 | 10.0 | 13.921 | O | 102 |
| A10622 | 0.0 | 75.0 | 15.0 | 10.0 | 13.620 | O | 102 |
| A10623 | 19.0 | 51.0 | 20.0 | 10.0 | 19.001 | X | 136 |
| A10624 | 18.9 | 51.1 | 20.0 | 10.0 | 18.971 | O | 136 |
| A10625 | 18.0 | 52.0 | 20.0 | 10.0 | 18.700 | O | 136 |
| A10626 | 15.0 | 55.0 | 20.0 | 10.0 | 17.798 | O | 136 |
| A10627 | 10.0 | 60.0 | 20.0 | 10.0 | 16.294 | O | 136 |
| A10628 | 9.0 | 61.0 | 20.0 | 10.0 | 15.993 | O | 136 |
| A10629 | 8.0 | 62.0 | 20.0 | 10.0 | 15.692 | O | 136 |
| A10630 | 7.0 | 63.0 | 20.0 | 10.0 | 15.391 | O | 136 |
| A10631 | 6.0 | 64.0 | 20.0 | 10.0 | 15.090 | O | 136 |
| A10632 | 5.0 | 65.0 | 20.0 | 10.0 | 14.789 | O | 136 |
| A10633 | 4.0 | 66.0 | 20.0 | 10.0 | 14.489 | O | 136 |
| A10634 | 3.0 | 67.0 | 20.0 | 10.0 | 14.188 | O | 136 |
| A10635 | 2.0 | 68.0 | 20.0 | 10.0 | 13.887 | O | 136 |
| A10636 | 1.0 | 69.0 | 20.0 | 10.0 | 13.586 | O | 136 |
| A10637 | 0.0 | 70.0 | 20.0 | 10.0 | 13.285 | O | 136 |
| A10638 | 20.0 | 48.0 | 22.0 | 10.0 | 19.168 | X | 150 |
| A10639 | 19.5 | 48.5 | 22.0 | 10.0 | 19.017 | X | 150 |
| A10640 | 19.4 | 48.6 | 22.0 | 10.0 | 18.987 | O | 150 |
| A10641 | 19.0 | 49.0 | 22.0 | 10.0 | 18.867 | O | 150 |
| A10642 | 15.0 | 53.0 | 22.0 | 10.0 | 17.664 | O | 150 |
| A10643 | 10.0 | 58.0 | 22.0 | 10.0 | 16.160 | O | 150 |
| A10644 | 9.0 | 59.0 | 22.0 | 10.0 | 15.859 | O | 150 |
| A10645 | 8.0 | 60.0 | 22.0 | 10.0 | 15.558 | O | 150 |
| A10646 | 7.0 | 61.0 | 22.0 | 10.0 | 15.257 | O | 150 |
| A10647 | 6.0 | 62.0 | 22.0 | 10.0 | 14.956 | O | 150 |
| A10648 | 5.0 | 63.0 | 22.0 | 10.0 | 14.655 | O | 150 |
| A10649 | 4.0 | 64.0 | 22.0 | 10.0 | 14.355 | O | 150 |
| A10650 | 3.0 | 65.0 | 22.0 | 10.0 | 14.054 | O | 150 |
| A10651 | 2.0 | 66.0 | 22.0 | 10.0 | 13.753 | O | 150 |
| A10652 | 1.0 | 67.0 | 22.0 | 10.0 | 13.452 | O | 150 |
| A10653 | 0.0 | 68.0 | 22.0 | 10.0 | 13.151 | O | 150 |

Tables 429 to 439 show the composition, combustion heat amount, and GWP of the working medium of a four-component system of propane, HFO-1132(E), HFC-32, and $CF_3I$.

[Table 429]

| Case | propane | HFO-1132(E) | HFC-32 | CF$_3$I | Heat of Combustion | Evaluation | GWP |
|---|---|---|---|---|---|---|---|
| A10654 | 13.0 | 80.0 | 2.0 | 5.0 | 19.282 | X | 15 |
| A10655 | 12.1 | 80.9 | 2.0 | 5.0 | 19.011 | X | 15 |
| A10656 | 12.0 | 81.0 | 2.0 | 5.0 | 18.981 | O | 15 |
| A10657 | 10.0 | 83.0 | 2.0 | 5.0 | 18.379 | O | 15 |
| A10658 | 9.0 | 84.0 | 2.0 | 5.0 | 18.078 | O | 15 |
| A10659 | 8.0 | 85.0 | 2.0 | 5.0 | 17.778 | O | 15 |
| A10660 | 7.0 | 86.0 | 2.0 | 5.0 | 17.477 | O | 15 |
| A10661 | 6.0 | 87.0 | 2.0 | 5.0 | 17.176 | O | 15 |
| A10662 | 5.0 | 88.0 | 2.0 | 5.0 | 16.875 | O | 15 |
| A10663 | 4.0 | 89.0 | 2.0 | 5.0 | 16.574 | O | 15 |
| A10664 | 3.0 | 90.0 | 2.0 | 5.0 | 16.274 | O | 15 |
| A10665 | 2.0 | 91.0 | 2.0 | 5.0 | 15.973 | O | 15 |
| A10666 | 1.0 | 92.0 | 2.0 | 5.0 | 15.672 | O | 15 |
| A10667 | 0.0 | 93.0 | 2.0 | 5.0 | 15.348 | O | 15 |
| A10668 | 13.0 | 77.0 | 5.0 | 5.0 | 19.081 | X | 35 |
| A10669 | 12.8 | 77.2 | 5.0 | 5.0 | 19.021 | X | 35 |
| A10670 | 12.7 | 77.3 | 5.0 | 5.0 | 18.990 | O | 35 |
| A10671 | 12.0 | 78.0 | 5.0 | 5.0 | 18.780 | O | 35 |
| A10672 | 10.0 | 80.0 | 5.0 | 5.0 | 18.178 | O | 35 |
| A10673 | 9.0 | 81.0 | 5.0 | 5.0 | 17.877 | O | 35 |
| A10674 | 8.0 | 82.0 | 5.0 | 5.0 | 17.577 | O | 35 |
| A10675 | 7.0 | 83.0 | 5.0 | 5.0 | 17.276 | O | 35 |
| A10676 | 6.0 | 84.0 | 5.0 | 5.0 | 16.975 | O | 35 |
| A10677 | 5.0 | 85.0 | 5.0 | 5.0 | 16.674 | O | 35 |
| A10678 | 4.0 | 86.0 | 5.0 | 5.0 | 16.373 | O | 35 |
| A10679 | 3.0 | 87.0 | 5.0 | 5.0 | 16.072 | O | 35 |
| A10680 | 2.0 | 88.0 | 5.0 | 5.0 | 15.772 | O | 35 |
| A10681 | 1.0 | 89.0 | 5.0 | 5.0 | 15.471 | O | 35 |
| A10682 | 0.0 | 90.0 | 5.0 | 5.0 | 15.147 | O | 35 |
| A10683 | 14.0 | 71.0 | 10.0 | 5.0 | 19.046 | X | 69 |
| A10684 | 13.9 | 71.1 | 10.0 | 5.0 | 19.016 | X | 69 |
| A10685 | 13.8 | 71.2 | 10.0 | 5.0 | 18.986 | O | 69 |
| A10686 | 12.0 | 73.0 | 10.0 | 5.0 | 18.445 | O | 69 |
| A10687 | 10.0 | 75.0 | 10.0 | 5.0 | 17.843 | O | 69 |
| A10688 | 9.0 | 76.0 | 10.0 | 5.0 | 17.542 | O | 69 |
| A10689 | 8.0 | 77.0 | 10.0 | 5.0 | 17.241 | O | 69 |
| A10690 | 7.0 | 78.0 | 10.0 | 5.0 | 16.941 | O | 69 |
| A10691 | 6.0 | 79.0 | 10.0 | 5.0 | 16.640 | O | 69 |
| A10692 | 5.0 | 80.0 | 10.0 | 5.0 | 16.339 | O | 69 |
| A10693 | 4.0 | 81.0 | 10.0 | 5.0 | 16.038 | O | 69 |
| A10694 | 3.0 | 82.0 | 10.0 | 5.0 | 15.737 | O | 69 |
| A10695 | 2.0 | 83.0 | 10.0 | 5.0 | 15.436 | O | 69 |
| A10696 | 1.0 | 84.0 | 10.0 | 5.0 | 15.136 | O | 69 |
| A10697 | 0.0 | 85.0 | 10.0 | 5.0 | 14.812 | O | 69 |
| A10698 | 15.0 | 65.0 | 15.0 | 5.0 | 19.012 | X | 102 |
| A10699 | 14.9 | 65.1 | 15.0 | 5.0 | 18.982 | O | 102 |
| A10700 | 14.0 | 66.0 | 15.0 | 5.0 | 18.711 | O | 102 |
| A10701 | 10.0 | 70.0 | 15.0 | 5.0 | 17.508 | O | 102 |
| A10702 | 9.0 | 71.0 | 15.0 | 5.0 | 17.207 | O | 102 |
| A10703 | 8.0 | 72.0 | 15.0 | 5.0 | 16.906 | O | 102 |

[Table 430]

| A10704 | 7.0 | 73.0 | 15.0 | 5.0 | 16.605 | O | 102 |
|---|---|---|---|---|---|---|---|
| A10705 | 6.0 | 74.0 | 15.0 | 5.0 | 16.305 | O | 102 |
| A10706 | 5.0 | 75.0 | 15.0 | 5.0 | 16.004 | O | 102 |
| A10707 | 4.0 | 76.0 | 15.0 | 5.0 | 15.703 | O | 102 |
| A10708 | 3.0 | 77.0 | 15.0 | 5.0 | 15.402 | O | 102 |
| A10709 | 2.0 | 78.0 | 15.0 | 5.0 | 15.101 | O | 102 |
| A10710 | 1.0 | 79.0 | 15.0 | 5.0 | 14.800 | O | 102 |
| A10711 | 0.0 | 80.0 | 15.0 | 5.0 | 14.477 | O | 102 |
| A10712 | 17.0 | 58.0 | 20.0 | 5.0 | 19.279 | X | 136 |
| A10713 | 16.1 | 58.9 | 20.0 | 5.0 | 19.008 | X | 136 |
| A10714 | 16.0 | 59.0 | 20.0 | 5.0 | 18.978 | O | 136 |
| A10715 | 15.0 | 60.0 | 20.0 | 5.0 | 18.677 | O | 136 |
| A10716 | 10.0 | 65.0 | 20.0 | 5.0 | 17.173 | O | 136 |
| A10717 | 9.0 | 66.0 | 20.0 | 5.0 | 16.872 | O | 136 |
| A10718 | 8.0 | 67.0 | 20.0 | 5.0 | 16.571 | O | 136 |
| A10719 | 7.0 | 68.0 | 20.0 | 5.0 | 16.270 | O | 136 |
| A10720 | 6.0 | 69.0 | 20.0 | 5.0 | 15.969 | O | 136 |
| A10721 | 5.0 | 70.0 | 20.0 | 5.0 | 15.669 | O | 136 |
| A10722 | 4.0 | 71.0 | 20.0 | 5.0 | 15.368 | O | 136 |
| A10723 | 3.0 | 72.0 | 20.0 | 5.0 | 15.067 | O | 136 |
| A10724 | 2.0 | 73.0 | 20.0 | 5.0 | 14.766 | O | 136 |
| A10725 | 1.0 | 74.0 | 20.0 | 5.0 | 14.465 | O | 136 |
| A10726 | 0.0 | 75.0 | 20.0 | 5.0 | 14.142 | O | 136 |
| A10727 | 17.0 | 56.0 | 22.0 | 5.0 | 19.144 | X | 150 |
| A10728 | 16.6 | 56.4 | 22.0 | 5.0 | 19.024 | X | 150 |
| A10729 | 16.5 | 56.5 | 22.0 | 5.0 | 18.994 | O | 150 |
| A10730 | 16.0 | 57.0 | 22.0 | 5.0 | 18.844 | O | 150 |
| A10731 | 15.0 | 58.0 | 22.0 | 5.0 | 18.543 | O | 150 |
| A10732 | 10.0 | 63.0 | 22.0 | 5.0 | 17.039 | O | 150 |
| A10733 | 9.0 | 64.0 | 22.0 | 5.0 | 16.738 | O | 150 |
| A10734 | 8.0 | 65.0 | 22.0 | 5.0 | 16.437 | O | 150 |
| A10735 | 7.0 | 66.0 | 22.0 | 5.0 | 16.136 | O | 150 |
| A10736 | 6.0 | 67.0 | 22.0 | 5.0 | 15.835 | O | 150 |
| A10737 | 5.0 | 68.0 | 22.0 | 5.0 | 15.534 | O | 150 |
| A10738 | 4.0 | 69.0 | 22.0 | 5.0 | 15.234 | O | 150 |
| A10739 | 3.0 | 70.0 | 22.0 | 5.0 | 14.933 | O | 150 |
| A10740 | 2.0 | 71.0 | 22.0 | 5.0 | 14.632 | O | 150 |
| A10741 | 1.0 | 72.0 | 22.0 | 5.0 | 14.331 | O | 150 |
| A10742 | 0.0 | 73.0 | 22.0 | 5.0 | 14.008 | O | 150 |
| A10743 | 15.0 | 73.0 | 2.0 | 10.0 | 19.137 | X | 15 |
| A10744 | 14.6 | 73.4 | 2.0 | 10.0 | 19.017 | X | 15 |
| A10745 | 14.5 | 73.5 | 2.0 | 10.0 | 18.987 | O | 15 |
| A10746 | 14.0 | 74.0 | 2.0 | 10.0 | 18.837 | O | 15 |
| A10747 | 10.0 | 78.0 | 2.0 | 10.0 | 17.633 | O | 15 |
| A10748 | 9.0 | 79.0 | 2.0 | 10.0 | 17.332 | O | 15 |
| A10749 | 8.0 | 80.0 | 2.0 | 10.0 | 17.032 | O | 15 |
| A10750 | 7.0 | 81.0 | 2.0 | 10.0 | 16.731 | O | 15 |
| A10751 | 6.0 | 82.0 | 2.0 | 10.0 | 16.430 | O | 15 |
| A10752 | 5.0 | 83.0 | 2.0 | 10.0 | 16.129 | O | 15 |
| A10753 | 4.0 | 84.0 | 2.0 | 10.0 | 15.828 | O | 15 |

[Table 431]

| A10754 | 3.0 | 85.0 | 2.0 | 10.0 | 15.527 | O | 15 |
|---|---|---|---|---|---|---|---|
| A10755 | 2.0 | 86.0 | 2.0 | 10.0 | 15.227 | O | 15 |
| A10756 | 1.0 | 87.0 | 2.0 | 10.0 | 14.926 | O | 15 |
| A10757 | 0.0 | 88.0 | 2.0 | 10.0 | 14.580 | O | 15 |
| A10758 | 16.0 | 69.0 | 5.0 | 10.0 | 19.237 | X | 35 |
| A10759 | 15.3 | 69.7 | 5.0 | 10.0 | 19.027 | X | 35 |
| A10760 | 15.2 | 69.8 | 5.0 | 10.0 | 18.997 | O | 35 |
| A10761 | 15.0 | 70.0 | 5.0 | 10.0 | 18.936 | O | 35 |
| A10762 | 10.0 | 75.0 | 5.0 | 10.0 | 17.432 | O | 35 |
| A10763 | 9.0 | 76.0 | 5.0 | 10.0 | 17.131 | O | 35 |
| A10764 | 8.0 | 77.0 | 5.0 | 10.0 | 16.831 | O | 35 |
| A10765 | 7.0 | 78.0 | 5.0 | 10.0 | 16.530 | O | 35 |
| A10766 | 6.0 | 79.0 | 5.0 | 10.0 | 16.229 | O | 35 |
| A10767 | 5.0 | 80.0 | 5.0 | 10.0 | 15.928 | O | 35 |
| A10768 | 4.0 | 81.0 | 5.0 | 10.0 | 15.627 | O | 35 |
| A10769 | 3.0 | 82.0 | 5.0 | 10.0 | 15.326 | O | 35 |
| A10770 | 2.0 | 83.0 | 5.0 | 10.0 | 15.026 | O | 35 |
| A10771 | 1.0 | 84.0 | 5.0 | 10.0 | 14.725 | O | 35 |
| A10772 | 0.0 | 85.0 | 5.0 | 10.0 | 14.378 | O | 35 |
| A10773 | 17.0 | 63.0 | 10.0 | 10.0 | 19.203 | X | 69 |
| A10774 | 16.4 | 63.6 | 10.0 | 10.0 | 19.022 | X | 69 |
| A10775 | 16.3 | 63.7 | 10.0 | 10.0 | 18.992 | O | 69 |
| A10776 | 16.0 | 64.0 | 10.0 | 10.0 | 18.902 | O | 69 |
| A10777 | 10.0 | 70.0 | 10.0 | 10.0 | 17.097 | O | 69 |
| A10778 | 9.0 | 71.0 | 10.0 | 10.0 | 16.796 | O | 69 |
| A10779 | 8.0 | 72.0 | 10.0 | 10.0 | 16.495 | O | 69 |
| A10780 | 7.0 | 73.0 | 10.0 | 10.0 | 16.195 | O | 69 |
| A10781 | 6.0 | 74.0 | 10.0 | 10.0 | 15.894 | O | 69 |
| A10782 | 5.0 | 75.0 | 10.0 | 10.0 | 15.593 | O | 69 |
| A10783 | 4.0 | 76.0 | 10.0 | 10.0 | 15.292 | O | 69 |
| A10784 | 3.0 | 77.0 | 10.0 | 10.0 | 14.991 | O | 69 |
| A10785 | 2.0 | 78.0 | 10.0 | 10.0 | 14.690 | O | 69 |
| A10786 | 1.0 | 79.0 | 10.0 | 10.0 | 14.390 | O | 69 |
| A10787 | 0.0 | 80.0 | 10.0 | 10.0 | 14.043 | O | 69 |
| A10788 | 18.0 | 57.0 | 15.0 | 10.0 | 19.169 | X | 102 |
| A10789 | 17.5 | 57.5 | 15.0 | 10.0 | 19.018 | X | 102 |
| A10790 | 17.4 | 57.6 | 15.0 | 10.0 | 18.988 | O | 102 |
| A10791 | 17.0 | 58.0 | 15.0 | 10.0 | 18.868 | O | 102 |
| A10792 | 15.0 | 60.0 | 15.0 | 10.0 | 18.266 | O | 102 |
| A10793 | 10.0 | 65.0 | 15.0 | 10.0 | 16.762 | O | 102 |
| A10794 | 9.0 | 66.0 | 15.0 | 10.0 | 16.461 | O | 102 |
| A10795 | 8.0 | 67.0 | 15.0 | 10.0 | 16.160 | O | 102 |
| A10796 | 7.0 | 68.0 | 15.0 | 10.0 | 15.859 | O | 102 |
| A10797 | 6.0 | 69.0 | 15.0 | 10.0 | 15.559 | O | 102 |
| A10798 | 5.0 | 70.0 | 15.0 | 10.0 | 15.258 | O | 102 |
| A10799 | 4.0 | 71.0 | 15.0 | 10.0 | 14.957 | O | 102 |
| A10800 | 3.0 | 72.0 | 15.0 | 10.0 | 14.656 | O | 102 |
| A10801 | 2.0 | 73.0 | 15.0 | 10.0 | 14.355 | O | 102 |
| A10802 | 1.0 | 74.0 | 15.0 | 10.0 | 14.054 | O | 102 |
| A10803 | 0.0 | 75.0 | 15.0 | 10.0 | 13.708 | O | 102 |

[Table 432]

| | | | | | | | |
|---|---|---|---|---|---|---|---|
| A10804 | 19.0 | 51.0 | 20.0 | 10.0 | 19.134 | X | 136 |
| A10805 | 18.6 | 51.4 | 20.0 | 10.0 | 19.014 | X | 136 |
| A10806 | 18.5 | 51.5 | 20.0 | 10.0 | 18.984 | O | 136 |
| A10807 | 18.0 | 52.0 | 20.0 | 10.0 | 18.833 | O | 136 |
| A10808 | 15.0 | 55.0 | 20.0 | 10.0 | 17.931 | O | 136 |
| A10809 | 10.0 | 60.0 | 20.0 | 10.0 | 16.427 | O | 136 |
| A10810 | 9.0 | 61.0 | 20.0 | 10.0 | 16.126 | O | 136 |
| A10811 | 8.0 | 62.0 | 20.0 | 10.0 | 15.825 | O | 136 |
| A10812 | 7.0 | 63.0 | 20.0 | 10.0 | 15.524 | O | 136 |
| A10813 | 6.0 | 64.0 | 20.0 | 10.0 | 15.223 | O | 136 |
| A10814 | 5.0 | 65.0 | 20.0 | 10.0 | 14.923 | O | 136 |
| A10815 | 4.0 | 66.0 | 20.0 | 10.0 | 14.622 | O | 136 |
| A10816 | 3.0 | 67.0 | 20.0 | 10.0 | 14.321 | O | 136 |
| A10817 | 2.0 | 68.0 | 20.0 | 10.0 | 14.020 | O | 136 |
| A10818 | 1.0 | 69.0 | 20.0 | 10.0 | 13.719 | O | 136 |
| A10819 | 0.0 | 70.0 | 20.0 | 10.0 | 13.373 | O | 136 |
| A10820 | 19.0 | 51.0 | 20.0 | 10.0 | 19.134 | X | 136 |
| A10821 | 18.7 | 51.3 | 20.0 | 10.0 | 19.044 | X | 136 |
| A10822 | 18.6 | 49.4 | 22.0 | 10.0 | 18.880 | O | 150 |
| A10823 | 18.0 | 50.0 | 22.0 | 10.0 | 18.699 | O | 150 |
| A10824 | 15.0 | 53.0 | 22.0 | 10.0 | 17.797 | O | 150 |
| A10825 | 10.0 | 58.0 | 22.0 | 10.0 | 16.293 | O | 150 |
| A10826 | 9.0 | 59.0 | 22.0 | 10.0 | 15.992 | O | 150 |
| A10827 | 8.0 | 60.0 | 22.0 | 10.0 | 15.691 | O | 150 |
| A10828 | 7.0 | 61.0 | 22.0 | 10.0 | 15.390 | O | 150 |
| A10829 | 6.0 | 62.0 | 22.0 | 10.0 | 15.089 | O | 150 |
| A10830 | 5.0 | 63.0 | 22.0 | 10.0 | 14.788 | O | 150 |
| A10831 | 4.0 | 64.0 | 22.0 | 10.0 | 14.488 | O | 150 |
| A10832 | 3.0 | 65.0 | 22.0 | 10.0 | 14.187 | O | 150 |
| A10833 | 2.0 | 66.0 | 22.0 | 10.0 | 13.886 | O | 150 |
| A10834 | 1.0 | 67.0 | 22.0 | 10.0 | 13.585 | O | 150 |
| A10835 | 0.0 | 68.0 | 22.0 | 10.0 | 13.239 | O | 150 |
| A10836 | 20.0 | 58.0 | 2.0 | 20.0 | 19.150 | X | 15 |
| A10837 | 19.6 | 58.4 | 2.0 | 20.0 | 19.029 | X | 15 |
| A10838 | 19.5 | 58.5 | 2.0 | 20.0 | 18.999 | O | 15 |
| A10839 | 19.0 | 59.0 | 2.0 | 20.0 | 18.849 | O | 15 |
| A10840 | 15.0 | 63.0 | 2.0 | 20.0 | 17.645 | O | 15 |
| A10841 | 10.0 | 68.0 | 2.0 | 20.0 | 16.141 | O | 15 |
| A10842 | 9.0 | 69.0 | 2.0 | 20.0 | 15.840 | O | 15 |
| A10843 | 8.0 | 70.0 | 2.0 | 20.0 | 15.540 | O | 15 |
| A10844 | 7.0 | 71.0 | 2.0 | 20.0 | 15.239 | O | 15 |
| A10845 | 6.0 | 72.0 | 2.0 | 20.0 | 14.938 | O | 15 |
| A10846 | 5.0 | 73.0 | 2.0 | 20.0 | 14.637 | O | 15 |
| A10847 | 4.0 | 74.0 | 2.0 | 20.0 | 14.336 | O | 15 |
| A10848 | 3.0 | 75.0 | 2.0 | 20.0 | 14.035 | O | 15 |
| A10849 | 2.0 | 76.0 | 2.0 | 20.0 | 13.735 | O | 15 |
| A10850 | 1.0 | 77.0 | 2.0 | 20.0 | 13.397 | O | 15 |
| A10851 | 0.0 | 78.0 | 2.0 | 20.0 | 13.042 | O | 15 |
| A10852 | 21.0 | 54.0 | 5.0 | 20.0 | 19.249 | X | 35 |
| A10853 | 20.2 | 54.8 | 5.0 | 20.0 | 19.009 | X | 35 |

[Table 433]

| A10854 | 20.1 | 54.9 | 5.0 | 20.0 | 18.979 | O | 35 |
|--------|------|------|-----|------|--------|---|-----|
| A10855 | 20.0 | 55.0 | 5.0 | 20.0 | 18.948 | O | 35 |
| A10856 | 15.0 | 60.0 | 5.0 | 20.0 | 17.444 | O | 35 |
| A10857 | 10.0 | 65.0 | 5.0 | 20.0 | 15.940 | O | 35 |
| A10858 | 9.0 | 66.0 | 5.0 | 20.0 | 15.639 | O | 35 |
| A10859 | 8.0 | 67.0 | 5.0 | 20.0 | 15.339 | O | 35 |
| A10860 | 7.0 | 68.0 | 5.0 | 20.0 | 15.038 | O | 35 |
| A10861 | 6.0 | 69.0 | 5.0 | 20.0 | 14.737 | O | 35 |
| A10862 | 5.0 | 70.0 | 5.0 | 20.0 | 14.436 | O | 35 |
| A10863 | 4.0 | 71.0 | 5.0 | 20.0 | 14.135 | O | 35 |
| A10864 | 3.0 | 72.0 | 5.0 | 20.0 | 13.834 | O | 35 |
| A10865 | 2.0 | 73.0 | 5.0 | 20.0 | 13.534 | O | 35 |
| A10866 | 1.0 | 74.0 | 5.0 | 20.0 | 13.196 | O | 35 |
| A10867 | 0.0 | 75.0 | 5.0 | 20.0 | 12.841 | O | 35 |
| A10868 | 22.0 | 48.0 | 10.0 | 20.0 | 19.215 | X | 69 |
| A10869 | 21.3 | 48.7 | 10.0 | 20.0 | 19.004 | X | 69 |
| A10870 | 21.2 | 48.8 | 10.0 | 20.0 | 18.974 | O | 69 |
| A10871 | 21.0 | 49.0 | 10.0 | 20.0 | 18.914 | O | 69 |
| A10872 | 20.0 | 50.0 | 10.0 | 20.0 | 18.613 | O | 69 |
| A10873 | 15.0 | 55.0 | 10.0 | 20.0 | 17.109 | O | 69 |
| A10874 | 10.0 | 60.0 | 10.0 | 20.0 | 15.605 | O | 69 |
| A10875 | 9.0 | 61.0 | 10.0 | 20.0 | 15.304 | O | 69 |
| A10876 | 8.0 | 62.0 | 10.0 | 20.0 | 15.003 | O | 69 |
| A10877 | 7.0 | 63.0 | 10.0 | 20.0 | 14.703 | O | 69 |
| A10878 | 6.0 | 64.0 | 10.0 | 20.0 | 14.402 | O | 69 |
| A10879 | 5.0 | 65.0 | 10.0 | 20.0 | 14.101 | O | 69 |
| A10880 | 4.0 | 66.0 | 10.0 | 20.0 | 13.800 | O | 69 |
| A10881 | 3.0 | 67.0 | 10.0 | 20.0 | 13.499 | O | 69 |
| A10882 | 2.0 | 68.0 | 10.0 | 20.0 | 13.198 | O | 69 |
| A10883 | 1.0 | 69.0 | 10.0 | 20.0 | 12.860 | O | 69 |
| A10884 | 0.0 | 70.0 | 10.0 | 20.0 | 12.506 | O | 69 |
| A10885 | 23.0 | 42.0 | 15.0 | 20.0 | 19.181 | X | 102 |
| A10886 | 22.4 | 42.6 | 15.0 | 20.0 | 19.000 | X | 102 |
| A10887 | 22.3 | 42.7 | 15.0 | 20.0 | 18.970 | O | 102 |
| A10888 | 22.0 | 43.0 | 15.0 | 20.0 | 18.880 | O | 102 |
| A10889 | 20.0 | 45.0 | 15.0 | 20.0 | 18.278 | O | 102 |
| A10890 | 15.0 | 50.0 | 15.0 | 20.0 | 16.774 | O | 102 |
| A10891 | 10.0 | 55.0 | 15.0 | 20.0 | 15.270 | O | 102 |
| A10892 | 9.0 | 56.0 | 15.0 | 20.0 | 14.969 | O | 102 |
| A10893 | 8.0 | 57.0 | 15.0 | 20.0 | 14.668 | O | 102 |
| A10894 | 7.0 | 58.0 | 15.0 | 20.0 | 14.367 | O | 102 |
| A10895 | 6.0 | 59.0 | 15.0 | 20.0 | 14.067 | O | 102 |
| A10896 | 5.0 | 60.0 | 15.0 | 20.0 | 13.766 | O | 102 |
| A10897 | 4.0 | 61.0 | 15.0 | 20.0 | 13.465 | O | 102 |
| A10898 | 3.0 | 62.0 | 15.0 | 20.0 | 13.164 | O | 102 |
| A10899 | 2.0 | 63.0 | 15.0 | 20.0 | 12.863 | O | 102 |
| A10900 | 1.0 | 64.0 | 15.0 | 20.0 | 12.525 | O | 102 |
| A10901 | 0.0 | 65.0 | 15.0 | 20.0 | 12.171 | O | 102 |
| A10902 | 24.0 | 36.0 | 20.0 | 20.0 | 19.146 | X | 136 |
| A10903 | 23.6 | 36.4 | 20.0 | 20.0 | 19.026 | X | 136 |

[Table 434]

| | | | | | | | |
|---|---|---|---|---|---|---|---|
| A10904 | 23.5 | 36.5 | 20.0 | 20.0 | 18.996 | O | 136 |
| A10905 | 23.0 | 37.0 | 20.0 | 20.0 | 18.845 | O | 136 |
| A10906 | 20.0 | 40.0 | 20.0 | 20.0 | 17.943 | O | 136 |
| A10907 | 15.0 | 45.0 | 20.0 | 20.0 | 16.439 | O | 136 |
| A10908 | 10.0 | 50.0 | 20.0 | 20.0 | 14.935 | O | 136 |
| A10909 | 9.0 | 51.0 | 20.0 | 20.0 | 14.634 | O | 136 |
| A10910 | 8.0 | 52.0 | 20.0 | 20.0 | 14.333 | O | 136 |
| A10911 | 7.0 | 53.0 | 20.0 | 20.0 | 14.032 | O | 136 |
| A10912 | 6.0 | 54.0 | 20.0 | 20.0 | 13.731 | O | 136 |
| A10913 | 5.0 | 55.0 | 20.0 | 20.0 | 13.431 | O | 136 |
| A10914 | 4.0 | 56.0 | 20.0 | 20.0 | 13.130 | O | 136 |
| A10915 | 3.0 | 57.0 | 20.0 | 20.0 | 12.829 | O | 136 |
| A10916 | 2.0 | 58.0 | 20.0 | 20.0 | 12.528 | O | 136 |
| A10917 | 1.0 | 59.0 | 20.0 | 20.0 | 12.190 | O | 136 |
| A10918 | 0.0 | 60.0 | 20.0 | 20.0 | 11.835 | O | 136 |
| A10919 | 24.0 | 34.0 | 22.0 | 20.0 | 19.012 | X | 150 |
| A10920 | 23.9 | 34.1 | 22.0 | 20.0 | 18.982 | O | 150 |
| A10921 | 23.0 | 35.0 | 22.0 | 20.0 | 18.711 | O | 150 |
| A10922 | 20.0 | 38.0 | 22.0 | 20.0 | 17.809 | O | 150 |
| A10923 | 15.0 | 43.0 | 22.0 | 20.0 | 16.305 | O | 150 |
| A10924 | 10.0 | 48.0 | 22.0 | 20.0 | 14.801 | O | 150 |
| A10925 | 9.0 | 49.0 | 22.0 | 20.0 | 14.500 | O | 150 |
| A10926 | 8.0 | 50.0 | 22.0 | 20.0 | 14.199 | O | 150 |
| A10927 | 7.0 | 51.0 | 22.0 | 20.0 | 13.898 | O | 150 |
| A10928 | 6.0 | 52.0 | 22.0 | 20.0 | 13.597 | O | 150 |
| A10929 | 5.0 | 53.0 | 22.0 | 20.0 | 13.296 | O | 150 |
| A10930 | 4.0 | 54.0 | 22.0 | 20.0 | 12.996 | O | 150 |
| A10931 | 3.0 | 55.0 | 22.0 | 20.0 | 12.695 | O | 150 |
| A10932 | 2.0 | 56.0 | 22.0 | 20.0 | 12.394 | O | 150 |
| A10933 | 1.0 | 57.0 | 22.0 | 20.0 | 12.056 | O | 150 |
| A10934 | 0.0 | 58.0 | 22.0 | 20.0 | 11.701 | O | 150 |
| A10935 | 25.0 | 43.0 | 2.0 | 30.0 | 19.162 | X | 15 |
| A10936 | 24.5 | 43.5 | 2.0 | 30.0 | 19.011 | X | 15 |
| A10937 | 24.4 | 43.6 | 2.0 | 30.0 | 18.981 | O | 15 |
| A10938 | 24.0 | 44.0 | 2.0 | 30.0 | 18.861 | O | 15 |
| A10939 | 20.0 | 48.0 | 2.0 | 30.0 | 17.658 | O | 15 |
| A10940 | 15.0 | 53.0 | 2.0 | 30.0 | 16.153 | O | 15 |
| A10941 | 10.0 | 58.0 | 2.0 | 30.0 | 14.649 | O | 15 |
| A10942 | 9.0 | 59.0 | 2.0 | 30.0 | 14.348 | O | 15 |
| A10943 | 8.0 | 60.0 | 2.0 | 30.0 | 14.048 | O | 15 |
| A10944 | 7.0 | 61.0 | 2.0 | 30.0 | 13.747 | O | 15 |
| A10945 | 6.0 | 62.0 | 2.0 | 30.0 | 13.446 | O | 15 |
| A10946 | 5.0 | 63.0 | 2.0 | 30.0 | 13.145 | O | 15 |
| A10947 | 4.0 | 64.0 | 2.0 | 30.0 | 12.844 | O | 15 |
| A10948 | 3.0 | 65.0 | 2.0 | 30.0 | 12.543 | O | 15 |
| A10949 | 2.0 | 66.0 | 2.0 | 30.0 | 12.214 | O | 15 |
| A10950 | 1.0 | 67.0 | 2.0 | 30.0 | 11.859 | O | 15 |
| A10951 | 0.0 | 68.0 | 2.0 | 30.0 | 11.505 | O | 15 |
| A10952 | 26.0 | 39.0 | 5.0 | 30.0 | 19.261 | X | 35 |
| A10953 | 25.2 | 39.8 | 5.0 | 30.0 | 19.021 | X | 35 |

[Table 435]

454

| A10954 | 25.1 | 39.9 | 5.0 | 30.0 | 18.991 | O | 35 |
|---|---|---|---|---|---|---|---|
| A10955 | 25.0 | 40.0 | 5.0 | 30.0 | 18.961 | O | 35 |
| A10956 | 20.0 | 45.0 | 5.0 | 30.0 | 17.456 | O | 35 |
| A10957 | 15.0 | 50.0 | 5.0 | 30.0 | 15.952 | O | 35 |
| A10958 | 10.0 | 55.0 | 5.0 | 30.0 | 14.448 | O | 35 |
| A10959 | 9.0 | 56.0 | 5.0 | 30.0 | 14.147 | O | 35 |
| A10960 | 8.0 | 57.0 | 5.0 | 30.0 | 13.846 | O | 35 |
| A10961 | 7.0 | 58.0 | 5.0 | 30.0 | 13.546 | O | 35 |
| A10962 | 6.0 | 59.0 | 5.0 | 30.0 | 13.245 | O | 35 |
| A10963 | 5.0 | 60.0 | 5.0 | 30.0 | 12.944 | O | 35 |
| A10964 | 4.0 | 61.0 | 5.0 | 30.0 | 12.643 | O | 35 |
| A10965 | 3.0 | 62.0 | 5.0 | 30.0 | 12.342 | O | 35 |
| A10966 | 2.0 | 63.0 | 5.0 | 30.0 | 12.013 | O | 35 |
| A10967 | 1.0 | 64.0 | 5.0 | 30.0 | 11.658 | O | 35 |
| A10968 | 0.0 | 65.0 | 5.0 | 30.0 | 11.303 | O | 35 |
| A10969 | 27.0 | 33.0 | 10.0 | 30.0 | 19.227 | X | 69 |
| A10970 | 26.3 | 33.7 | 10.0 | 30.0 | 19.017 | X | 69 |
| A10971 | 26.2 | 33.8 | 10.0 | 30.0 | 18.986 | O | 69 |
| A10972 | 26.0 | 34.0 | 10.0 | 30.0 | 18.926 | O | 69 |
| A10973 | 20.0 | 40.0 | 10.0 | 30.0 | 17.121 | O | 69 |
| A10974 | 15.0 | 45.0 | 10.0 | 30.0 | 15.617 | O | 69 |
| A10975 | 10.0 | 50.0 | 10.0 | 30.0 | 14.113 | O | 69 |
| A10976 | 9.0 | 51.0 | 10.0 | 30.0 | 13.812 | O | 69 |
| A10977 | 8.0 | 52.0 | 10.0 | 30.0 | 13.511 | O | 69 |
| A10978 | 7.0 | 53.0 | 10.0 | 30.0 | 13.210 | O | 69 |
| A10979 | 6.0 | 54.0 | 10.0 | 30.0 | 12.910 | O | 69 |
| A10980 | 5.0 | 55.0 | 10.0 | 30.0 | 12.609 | O | 69 |
| A10981 | 4.0 | 56.0 | 10.0 | 30.0 | 12.308 | O | 69 |
| A10982 | 3.0 | 57.0 | 10.0 | 30.0 | 12.007 | O | 69 |
| A10983 | 2.0 | 58.0 | 10.0 | 30.0 | 11.678 | O | 69 |
| A10984 | 1.0 | 59.0 | 10.0 | 30.0 | 11.323 | O | 69 |
| A10985 | 0.0 | 60.0 | 10.0 | 30.0 | 10.968 | O | 69 |
| A10986 | 28.0 | 27.0 | 15.0 | 30.0 | 19.193 | X | 102 |
| A10987 | 27.4 | 27.6 | 15.0 | 30.0 | 19.012 | X | 102 |
| A10988 | 27.3 | 27.7 | 15.0 | 30.0 | 18.982 | O | 102 |
| A10989 | 27.0 | 28.0 | 15.0 | 30.0 | 18.892 | O | 102 |
| A10990 | 20.0 | 35.0 | 15.0 | 30.0 | 16.786 | O | 102 |
| A10991 | 15.0 | 40.0 | 15.0 | 30.0 | 15.282 | O | 102 |
| A10992 | 10.0 | 45.0 | 15.0 | 30.0 | 13.778 | O | 102 |
| A10993 | 9.0 | 46.0 | 15.0 | 30.0 | 13.477 | O | 102 |
| A10994 | 8.0 | 47.0 | 15.0 | 30.0 | 13.176 | O | 102 |
| A10995 | 7.0 | 48.0 | 15.0 | 30.0 | 12.875 | O | 102 |
| A10996 | 6.0 | 49.0 | 15.0 | 30.0 | 12.574 | O | 102 |
| A10997 | 5.0 | 50.0 | 15.0 | 30.0 | 12.274 | O | 102 |
| A10998 | 4.0 | 51.0 | 15.0 | 30.0 | 11.973 | O | 102 |
| A10999 | 3.0 | 52.0 | 15.0 | 30.0 | 11.672 | O | 102 |
| A11000 | 2.0 | 53.0 | 15.0 | 30.0 | 11.342 | O | 102 |
| A11001 | 1.0 | 54.0 | 15.0 | 30.0 | 10.988 | O | 102 |
| A11002 | 0.0 | 55.0 | 15.0 | 30.0 | 10.633 | O | 102 |
| A11003 | 29.0 | 21.0 | 20.0 | 30.0 | 19.158 | X | 136 |

[Table 436]

| | | | | | | | |
|---|---|---|---|---|---|---|---|
| A11004 | 28.5 | 21.5 | 20.0 | 30.0 | 19.008 | X | 136 |
| A11005 | 28.4 | 21.6 | 20.0 | 30.0 | 18.978 | O | 136 |
| A11006 | 28.0 | 22.0 | 20.0 | 30.0 | 18.858 | O | 136 |
| A11007 | 20.0 | 30.0 | 20.0 | 30.0 | 16.451 | O | 136 |
| A11008 | 15.0 | 35.0 | 20.0 | 30.0 | 14.947 | O | 136 |
| A11009 | 10.0 | 40.0 | 20.0 | 30.0 | 13.443 | O | 136 |
| A11010 | 9.0 | 41.0 | 20.0 | 30.0 | 13.142 | O | 136 |
| A11011 | 8.0 | 42.0 | 20.0 | 30.0 | 12.841 | O | 136 |
| A11012 | 7.0 | 43.0 | 20.0 | 30.0 | 12.540 | O | 136 |
| A11013 | 6.0 | 44.0 | 20.0 | 30.0 | 12.239 | O | 136 |
| A11014 | 5.0 | 45.0 | 20.0 | 30.0 | 11.938 | O | 136 |
| A11015 | 4.0 | 46.0 | 20.0 | 30.0 | 11.638 | O | 136 |
| A11016 | 3.0 | 47.0 | 20.0 | 30.0 | 11.337 | O | 136 |
| A11017 | 2.0 | 48.0 | 20.0 | 30.0 | 11.007 | O | 136 |
| A11018 | 1.0 | 49.0 | 20.0 | 30.0 | 10.653 | O | 136 |
| A11019 | 0.0 | 50.0 | 20.0 | 30.0 | 10.298 | O | 136 |
| A11020 | 29.0 | 19.0 | 22.0 | 30.0 | 19.024 | X | 150 |
| A11021 | 28.9 | 19.1 | 22.0 | 30.0 | 18.994 | O | 150 |
| A11022 | 28.0 | 20.0 | 22.0 | 30.0 | 18.724 | O | 150 |
| A11023 | 20.0 | 28.0 | 22.0 | 30.0 | 16.317 | O | 150 |
| A11024 | 15.0 | 33.0 | 22.0 | 30.0 | 14.813 | O | 150 |
| A11025 | 10.0 | 38.0 | 22.0 | 30.0 | 13.309 | O | 150 |
| A11026 | 9.0 | 39.0 | 22.0 | 30.0 | 13.008 | O | 150 |
| A11027 | 8.0 | 40.0 | 22.0 | 30.0 | 12.707 | O | 150 |
| A11028 | 7.0 | 41.0 | 22.0 | 30.0 | 12.406 | O | 150 |
| A11029 | 6.0 | 42.0 | 22.0 | 30.0 | 12.105 | O | 150 |
| A11030 | 5.0 | 43.0 | 22.0 | 30.0 | 11.804 | O | 150 |
| A11031 | 4.0 | 44.0 | 22.0 | 30.0 | 11.504 | O | 150 |
| A11032 | 3.0 | 45.0 | 22.0 | 30.0 | 11.203 | O | 150 |
| A11033 | 2.0 | 46.0 | 22.0 | 30.0 | 10.873 | O | 150 |
| A11034 | 1.0 | 47.0 | 22.0 | 30.0 | 10.519 | O | 150 |
| A11035 | 0.0 | 48.0 | 22.0 | 30.0 | 10.164 | O | 150 |
| A11036 | 30.0 | 28.0 | 2.0 | 40.0 | 19.174 | X | 15 |
| A11037 | 29.5 | 28.5 | 2.0 | 40.0 | 19.023 | X | 15 |
| A11038 | 29.4 | 28.6 | 2.0 | 40.0 | 18.993 | O | 15 |
| A11039 | 29.0 | 29.0 | 2.0 | 40.0 | 18.873 | O | 15 |
| A11040 | 20.0 | 38.0 | 2.0 | 40.0 | 16.166 | O | 15 |
| A11041 | 15.0 | 43.0 | 2.0 | 40.0 | 14.661 | O | 15 |
| A11042 | 10.0 | 48.0 | 2.0 | 40.0 | 13.157 | O | 15 |
| A11043 | 9.0 | 49.0 | 2.0 | 40.0 | 12.856 | O | 15 |
| A11044 | 8.0 | 50.0 | 2.0 | 40.0 | 12.556 | O | 15 |
| A11045 | 7.0 | 51.0 | 2.0 | 40.0 | 12.255 | O | 15 |
| A11046 | 6.0 | 52.0 | 2.0 | 40.0 | 11.954 | O | 15 |
| A11047 | 5.0 | 53.0 | 2.0 | 40.0 | 11.653 | O | 15 |
| A11048 | 4.0 | 54.0 | 2.0 | 40.0 | 11.352 | O | 15 |
| A11049 | 3.0 | 55.0 | 2.0 | 40.0 | 11.031 | O | 15 |
| A11050 | 2.0 | 56.0 | 2.0 | 40.0 | 10.676 | O | 15 |
| A11051 | 1.0 | 57.0 | 2.0 | 40.0 | 10.322 | O | 15 |
| A11052 | 0.0 | 58.0 | 2.0 | 40.0 | 9.967 | O | 15 |
| A11053 | 31.0 | 24.0 | 5.0 | 40.0 | 19.274 | X | 35 |

[Table 437]

| | | | | | | | |
|---|---|---|---|---|---|---|---|
| A11054 | 30.1 | 24.9 | 5.0 | 40.0 | 19.003 | X | 35 |
| A11055 | 30.0 | 25.0 | 5.0 | 40.0 | 18.973 | O | 35 |
| A11056 | 20.0 | 35.0 | 5.0 | 40.0 | 15.964 | O | 35 |
| A11057 | 15.0 | 40.0 | 5.0 | 40.0 | 14.460 | O | 35 |
| A11058 | 10.0 | 45.0 | 5.0 | 40.0 | 12.956 | O | 35 |
| A11059 | 9.0 | 46.0 | 5.0 | 40.0 | 12.655 | O | 35 |
| A11060 | 8.0 | 47.0 | 5.0 | 40.0 | 12.354 | O | 35 |
| A11061 | 7.0 | 48.0 | 5.0 | 40.0 | 12.054 | O | 35 |
| A11062 | 6.0 | 49.0 | 5.0 | 40.0 | 11.753 | O | 35 |
| A11063 | 5.0 | 50.0 | 5.0 | 40.0 | 11.452 | O | 35 |
| A11064 | 4.0 | 51.0 | 5.0 | 40.0 | 11.151 | O | 35 |
| A11065 | 3.0 | 52.0 | 5.0 | 40.0 | 10.830 | O | 35 |
| A11066 | 2.0 | 53.0 | 5.0 | 40.0 | 10.475 | O | 35 |
| A11067 | 1.0 | 54.0 | 5.0 | 40.0 | 10.121 | O | 35 |
| A11068 | 0.0 | 55.0 | 5.0 | 40.0 | 9.766 | O | 35 |
| A11069 | 32.0 | 18.0 | 10.0 | 40.0 | 19.239 | X | 69 |
| A11070 | 31.3 | 18.7 | 10.0 | 40.0 | 19.029 | X | 69 |
| A11071 | 31.2 | 18.8 | 10.0 | 40.0 | 18.999 | O | 69 |
| A11072 | 31.0 | 19.0 | 10.0 | 40.0 | 18.938 | O | 69 |
| A11073 | 20.0 | 30.0 | 10.0 | 40.0 | 15.629 | O | 69 |
| A11074 | 15.0 | 35.0 | 10.0 | 40.0 | 14.125 | O | 69 |
| A11075 | 10.0 | 40.0 | 10.0 | 40.0 | 12.621 | O | 69 |
| A11076 | 9.0 | 41.0 | 10.0 | 40.0 | 12.320 | O | 69 |
| A11077 | 8.0 | 42.0 | 10.0 | 40.0 | 12.019 | O | 69 |
| A11078 | 7.0 | 43.0 | 10.0 | 40.0 | 11.718 | O | 69 |
| A11079 | 6.0 | 44.0 | 10.0 | 40.0 | 11.418 | O | 69 |
| A11080 | 5.0 | 45.0 | 10.0 | 40.0 | 11.117 | O | 69 |
| A11081 | 4.0 | 46.0 | 10.0 | 40.0 | 10.816 | O | 69 |
| A11082 | 3.0 | 47.0 | 10.0 | 40.0 | 10.495 | O | 69 |
| A11083 | 2.0 | 48.0 | 10.0 | 40.0 | 10.140 | O | 69 |
| A11084 | 1.0 | 49.0 | 10.0 | 40.0 | 9.785 | O | 69 |
| A11085 | 0.0 | 50.0 | 10.0 | 40.0 | 9.431 | O | 69 |
| A11086 | 33.0 | 12.0 | 15.0 | 40.0 | 19.205 | X | 102 |
| A11087 | 32.4 | 12.6 | 15.0 | 40.0 | 19.024 | X | 102 |
| A11088 | 32.3 | 12.7 | 15.0 | 40.0 | 18.994 | O | 102 |
| A11089 | 32.0 | 13.0 | 15.0 | 40.0 | 18.904 | O | 102 |
| A11090 | 20.0 | 25.0 | 15.0 | 40.0 | 15.294 | O | 102 |
| A11091 | 15.0 | 30.0 | 15.0 | 40.0 | 13.790 | O | 102 |
| A11092 | 10.0 | 35.0 | 15.0 | 40.0 | 12.286 | O | 102 |
| A11093 | 9.0 | 36.0 | 15.0 | 40.0 | 11.985 | O | 102 |
| A11094 | 8.0 | 37.0 | 15.0 | 40.0 | 11.684 | O | 102 |
| A11095 | 7.0 | 38.0 | 15.0 | 40.0 | 11.383 | O | 102 |
| A11096 | 6.0 | 39.0 | 15.0 | 40.0 | 11.082 | O | 102 |
| A11097 | 5.0 | 40.0 | 15.0 | 40.0 | 10.782 | O | 102 |
| A11098 | 4.0 | 41.0 | 15.0 | 40.0 | 10.481 | O | 102 |
| A11099 | 3.0 | 42.0 | 15.0 | 40.0 | 10.160 | O | 102 |
| A11100 | 2.0 | 43.0 | 15.0 | 40.0 | 9.805 | O | 102 |
| A11101 | 1.0 | 44.0 | 15.0 | 40.0 | 9.450 | O | 102 |
| A11102 | 0.0 | 45.0 | 15.0 | 40.0 | 9.096 | O | 102 |
| A11103 | 34.0 | 6.0 | 20.0 | 40.0 | 19.171 | X | 136 |

[Table 438]

| | | | | | | | |
|---|---|---|---|---|---|---|---|
| A11104 | 33.5 | 6.5 | 20.0 | 40.0 | 19.020 | X | 136 |
| A11105 | 33.4 | 6.6 | 20.0 | 40.0 | 18.990 | O | 136 |
| A11106 | 33.0 | 7.0 | 20.0 | 40.0 | 18.870 | O | 136 |
| A11107 | 20.0 | 20.0 | 20.0 | 40.0 | 14.959 | O | 136 |
| A11108 | 15.0 | 25.0 | 20.0 | 40.0 | 13.455 | O | 136 |
| A11109 | 10.0 | 30.0 | 20.0 | 40.0 | 11.951 | O | 136 |
| A11110 | 9.0 | 31.0 | 20.0 | 40.0 | 11.650 | O | 136 |
| A11111 | 8.0 | 32.0 | 20.0 | 40.0 | 11.349 | O | 136 |
| A11112 | 7.0 | 33.0 | 20.0 | 40.0 | 11.048 | O | 136 |
| A11113 | 6.0 | 34.0 | 20.0 | 40.0 | 10.747 | O | 136 |
| A11114 | 5.0 | 35.0 | 20.0 | 40.0 | 10.446 | O | 136 |
| A11115 | 4.0 | 36.0 | 20.0 | 40.0 | 10.146 | O | 136 |
| A11116 | 3.0 | 37.0 | 20.0 | 40.0 | 9.825 | O | 136 |
| A11117 | 2.0 | 38.0 | 20.0 | 40.0 | 9.470 | O | 136 |
| A11118 | 1.0 | 39.0 | 20.0 | 40.0 | 9.115 | O | 136 |
| A11119 | 0.0 | 40.0 | 20.0 | 40.0 | 8.760 | O | 136 |
| A11120 | 34.0 | 4.0 | 22.0 | 40.0 | 19.036 | X | 150 |
| A11121 | 33.9 | 4.1 | 22.0 | 40.0 | 19.006 | X | 150 |
| A11122 | 33.8 | 4.2 | 22.0 | 40.0 | 18.976 | O | 150 |
| A11123 | 33.0 | 5.0 | 22.0 | 40.0 | 18.736 | O | 150 |
| A11124 | 20.0 | 18.0 | 22.0 | 40.0 | 14.825 | O | 150 |
| A11125 | 15.0 | 23.0 | 22.0 | 40.0 | 13.321 | O | 150 |
| A11126 | 10.0 | 28.0 | 22.0 | 40.0 | 11.817 | O | 150 |
| A11127 | 9.0 | 29.0 | 22.0 | 40.0 | 11.516 | O | 150 |
| A11128 | 8.0 | 30.0 | 22.0 | 40.0 | 11.215 | O | 150 |
| A11129 | 7.0 | 31.0 | 22.0 | 40.0 | 10.914 | O | 150 |
| A11130 | 6.0 | 32.0 | 22.0 | 40.0 | 10.613 | O | 150 |
| A11131 | 5.0 | 33.0 | 22.0 | 40.0 | 10.312 | O | 150 |
| A11132 | 4.0 | 34.0 | 22.0 | 40.0 | 10.012 | O | 150 |
| A11133 | 3.0 | 35.0 | 22.0 | 40.0 | 9.690 | O | 150 |
| A11134 | 2.0 | 36.0 | 22.0 | 40.0 | 9.336 | O | 150 |
| A11135 | 1.0 | 37.0 | 22.0 | 40.0 | 8.981 | O | 150 |
| A11136 | 0.0 | 38.0 | 22.0 | 40.0 | 8.626 | O | 150 |
| A11137 | 35.0 | 13.0 | 2.0 | 50.0 | 19.186 | X | 15 |
| A11138 | 34.4 | 13.6 | 2.0 | 50.0 | 19.005 | X | 15 |
| A11139 | 34.3 | 13.7 | 2.0 | 50.0 | 18.975 | O | 15 |
| A11140 | 34.0 | 14.0 | 2.0 | 50.0 | 18.885 | O | 15 |
| A11141 | 30.0 | 18.0 | 2.0 | 50.0 | 17.682 | O | 15 |
| A11142 | 20.0 | 28.0 | 2.0 | 50.0 | 14.673 | O | 15 |
| A11143 | 15.0 | 33.0 | 2.0 | 50.0 | 13.169 | O | 15 |
| A11144 | 10.0 | 38.0 | 2.0 | 50.0 | 11.665 | O | 15 |
| A11145 | 9.0 | 39.0 | 2.0 | 50.0 | 11.364 | O | 15 |
| A11146 | 8.0 | 40.0 | 2.0 | 50.0 | 11.064 | O | 15 |
| A11147 | 7.0 | 41.0 | 2.0 | 50.0 | 10.763 | O | 15 |
| A11148 | 6.0 | 42.0 | 2.0 | 50.0 | 10.462 | O | 15 |
| A11149 | 5.0 | 43.0 | 2.0 | 50.0 | 10.161 | O | 15 |
| A11150 | 4.0 | 44.0 | 2.0 | 50.0 | 9.848 | O | 15 |
| A11151 | 3.0 | 45.0 | 2.0 | 50.0 | 9.494 | O | 15 |
| A11152 | 2.0 | 46.0 | 2.0 | 50.0 | 9.139 | O | 15 |
| A11153 | 1.0 | 47.0 | 2.0 | 50.0 | 8.784 | O | 15 |

[Table 439]

| | | | | | | |
|---|---|---|---|---|---|---|
| A11154 | 0.0 | 48.0 | 2.0 | 50.0 | 8.430 | O | 15 |
| A11155 | 36.0 | 9.0 | 5.0 | 50.0 | 19.286 | X | 35 |
| A11156 | 35.1 | 9.9 | 5.0 | 50.0 | 19.015 | X | 35 |
| A11157 | 35.0 | 10.0 | 5.0 | 50.0 | 18.985 | O | 35 |
| A11158 | 30.0 | 15.0 | 5.0 | 50.0 | 17.481 | O | 35 |
| A11159 | 20.0 | 25.0 | 5.0 | 50.0 | 14.472 | O | 35 |
| A11160 | 15.0 | 30.0 | 5.0 | 50.0 | 12.968 | O | 35 |
| A11161 | 10.0 | 35.0 | 5.0 | 50.0 | 11.464 | O | 35 |
| A11162 | 9.0 | 36.0 | 5.0 | 50.0 | 11.163 | O | 35 |
| A11163 | 8.0 | 37.0 | 5.0 | 50.0 | 10.862 | O | 35 |
| A11164 | 7.0 | 38.0 | 5.0 | 50.0 | 10.562 | O | 35 |
| A11165 | 6.0 | 39.0 | 5.0 | 50.0 | 10.261 | O | 35 |
| A11166 | 5.0 | 40.0 | 5.0 | 50.0 | 9.960 | O | 35 |
| A11167 | 4.0 | 41.0 | 5.0 | 50.0 | 9.647 | O | 35 |
| A11168 | 3.0 | 42.0 | 5.0 | 50.0 | 9.293 | O | 35 |
| A11169 | 2.0 | 43.0 | 5.0 | 50.0 | 8.938 | O | 35 |
| A11170 | 1.0 | 44.0 | 5.0 | 50.0 | 8.583 | O | 35 |
| A11171 | 0.0 | 45.0 | 5.0 | 50.0 | 8.228 | O | 35 |
| A11172 | 37.0 | 3.0 | 10.0 | 50.0 | 19.251 | X | 69 |
| A11173 | 36.2 | 3.8 | 10.0 | 50.0 | 19.011 | X | 69 |
| A11174 | 36.1 | 3.9 | 10.0 | 50.0 | 18.981 | O | 69 |
| A11175 | 36.0 | 4.0 | 10.0 | 50.0 | 18.951 | O | 69 |
| A11176 | 30.0 | 10.0 | 10.0 | 50.0 | 17.146 | O | 69 |
| A11177 | 20.0 | 20.0 | 10.0 | 50.0 | 14.137 | O | 69 |
| A11178 | 15.0 | 25.0 | 10.0 | 50.0 | 12.633 | O | 69 |
| A11179 | 10.0 | 30.0 | 10.0 | 50.0 | 11.129 | O | 69 |
| A11180 | 9.0 | 31.0 | 10.0 | 50.0 | 10.828 | O | 69 |
| A11181 | 8.0 | 32.0 | 10.0 | 50.0 | 10.527 | O | 69 |
| A11182 | 7.0 | 33.0 | 10.0 | 50.0 | 10.226 | O | 69 |
| A11183 | 6.0 | 34.0 | 10.0 | 50.0 | 9.926 | O | 69 |
| A11184 | 5.0 | 35.0 | 10.0 | 50.0 | 9.625 | O | 69 |
| A11185 | 4.0 | 36.0 | 10.0 | 50.0 | 9.312 | O | 69 |
| A11186 | 3.0 | 37.0 | 10.0 | 50.0 | 8.957 | O | 69 |
| A11187 | 2.0 | 38.0 | 10.0 | 50.0 | 8.603 | O | 69 |
| A11188 | 1.0 | 39.0 | 10.0 | 50.0 | 8.248 | O | 69 |
| A11189 | 0.0 | 40.0 | 10.0 | 50.0 | 7.893 | O | 69 |

Tables 440 to 449 show the composition, combustion heat amount, and GWP of the working medium of a four-component system of propane, HFO-1132(E), $CO_2$, and $CF_3I$.

[Table 440]

| Case | propane | HFO-1132(E) | $CO_2$ | $CF_3I$ | Heat of Combustion | Evaluation | GWP |
|---|---|---|---|---|---|---|---|
| A11190 | 13.0 | 80.0 | 2.0 | 5.0 | 19.091 | X | 1 |
| A11191 | 12.7 | 80.3 | 2.0 | 5.0 | 19.001 | X | 1 |
| A11192 | 12.6 | 80.4 | 2.0 | 5.0 | 18.971 | O | 1 |
| A11193 | 12.0 | 81.0 | 2.0 | 5.0 | 18.790 | O | 1 |
| A11194 | 10.0 | 83.0 | 2.0 | 5.0 | 18.188 | O | 1 |
| A11195 | 9.0 | 84.0 | 2.0 | 5.0 | 17.888 | O | 1 |
| A11196 | 8.0 | 85.0 | 2.0 | 5.0 | 17.587 | O | 1 |
| A11197 | 7.0 | 86.0 | 2.0 | 5.0 | 17.286 | O | 1 |
| A11198 | 6.0 | 87.0 | 2.0 | 5.0 | 16.985 | O | 1 |
| A11199 | 5.0 | 88.0 | 2.0 | 5.0 | 16.684 | O | 1 |
| A11200 | 4.0 | 89.0 | 2.0 | 5.0 | 16.383 | O | 1 |
| A11201 | 3.0 | 90.0 | 2.0 | 5.0 | 16.083 | O | 1 |
| A11202 | 2.0 | 91.0 | 2.0 | 5.0 | 15.782 | O | 1 |
| A11203 | 1.0 | 92.0 | 2.0 | 5.0 | 15.481 | O | 1 |
| A11204 | 0.0 | 93.0 | 2.0 | 5.0 | 15.157 | O | 1 |
| A11205 | 14.0 | 77.0 | 4.0 | 5.0 | 19.067 | X | 1 |
| A11206 | 13.8 | 77.2 | 4.0 | 5.0 | 19.006 | X | 1 |
| A11207 | 13.7 | 77.3 | 4.0 | 5.0 | 18.976 | O | 1 |
| A11208 | 13.0 | 78.0 | 4.0 | 5.0 | 18.766 | O | 1 |
| A11209 | 10.0 | 81.0 | 4.0 | 5.0 | 17.863 | O | 1 |
| A11210 | 9.0 | 82.0 | 4.0 | 5.0 | 17.563 | O | 1 |
| A11211 | 8.0 | 83.0 | 4.0 | 5.0 | 17.262 | O | 1 |
| A11212 | 7.0 | 84.0 | 4.0 | 5.0 | 16.961 | O | 1 |
| A11213 | 6.0 | 85.0 | 4.0 | 5.0 | 16.660 | O | 1 |
| A11214 | 5.0 | 86.0 | 4.0 | 5.0 | 16.359 | O | 1 |
| A11215 | 4.0 | 87.0 | 4.0 | 5.0 | 16.058 | O | 1 |
| A11216 | 3.0 | 88.0 | 4.0 | 5.0 | 15.758 | O | 1 |
| A11217 | 2.0 | 89.0 | 4.0 | 5.0 | 15.457 | O | 1 |
| A11218 | 1.0 | 90.0 | 4.0 | 5.0 | 15.156 | O | 1 |
| A11219 | 0.0 | 91.0 | 4.0 | 5.0 | 14.832 | O | 1 |
| A11220 | 15.0 | 74.0 | 6.0 | 5.0 | 19.042 | X | 1 |
| A11221 | 14.9 | 74.1 | 6.0 | 5.0 | 19.012 | X | 1 |
| A11222 | 14.8 | 74.2 | 6.0 | 5.0 | 18.982 | O | 1 |
| A11223 | 14.0 | 75.0 | 6.0 | 5.0 | 18.742 | O | 1 |
| A11224 | 10.0 | 79.0 | 6.0 | 5.0 | 17.538 | O | 1 |
| A11225 | 9.0 | 80.0 | 6.0 | 5.0 | 17.237 | O | 1 |
| A11226 | 8.0 | 81.0 | 6.0 | 5.0 | 16.937 | O | 1 |
| A11227 | 7.0 | 82.0 | 6.0 | 5.0 | 16.636 | O | 1 |
| A11228 | 6.0 | 83.0 | 6.0 | 5.0 | 16.335 | O | 1 |
| A11229 | 5.0 | 84.0 | 6.0 | 5.0 | 16.034 | O | 1 |
| A11230 | 4.0 | 85.0 | 6.0 | 5.0 | 15.733 | O | 1 |
| A11231 | 3.0 | 86.0 | 6.0 | 5.0 | 15.433 | O | 1 |
| A11232 | 2.0 | 87.0 | 6.0 | 5.0 | 15.132 | O | 1 |
| A11233 | 1.0 | 88.0 | 6.0 | 5.0 | 14.831 | O | 1 |
| A11234 | 0.0 | 89.0 | 6.0 | 5.0 | 14.507 | O | 1 |
| A11235 | 16.0 | 71.0 | 8.0 | 5.0 | 19.018 | X | 1 |
| A11236 | 15.9 | 71.1 | 8.0 | 5.0 | 18.988 | O | 1 |
| A11237 | 15.0 | 72.0 | 8.0 | 5.0 | 18.717 | O | 1 |
| A11238 | 10.0 | 77.0 | 8.0 | 5.0 | 17.213 | O | 1 |
| A11239 | 9.0 | 78.0 | 8.0 | 5.0 | 16.912 | O | 1 |

[Table 441]

| A11240 | 8.0 | 79.0 | 8.0 | 5.0 | 16.612 | O | 1 |
|---|---|---|---|---|---|---|---|
| A11241 | 7.0 | 80.0 | 8.0 | 5.0 | 16.311 | O | 1 |
| A11242 | 6.0 | 81.0 | 8.0 | 5.0 | 16.010 | O | 1 |
| A11243 | 5.0 | 82.0 | 8.0 | 5.0 | 15.709 | O | 1 |
| A11244 | 4.0 | 83.0 | 8.0 | 5.0 | 15.408 | O | 1 |
| A11245 | 3.0 | 84.0 | 8.0 | 5.0 | 15.107 | O | 1 |
| A11246 | 2.0 | 85.0 | 8.0 | 5.0 | 14.807 | O | 1 |
| A11247 | 1.0 | 86.0 | 8.0 | 5.0 | 14.506 | O | 1 |
| A11248 | 0.0 | 87.0 | 8.0 | 5.0 | 14.182 | O | 1 |
| A11249 | 18.0 | 67.0 | 10.0 | 5.0 | 19.295 | X | 1 |
| A11250 | 17.1 | 67.9 | 10.0 | 5.0 | 19.024 | X | 1 |
| A11251 | 17.0 | 68.0 | 10.0 | 5.0 | 18.994 | O | 1 |
| A11252 | 10.0 | 75.0 | 10.0 | 5.0 | 16.888 | O | 1 |
| A11253 | 9.0 | 76.0 | 10.0 | 5.0 | 16.587 | O | 1 |
| A11254 | 8.0 | 77.0 | 10.0 | 5.0 | 16.287 | O | 1 |
| A11255 | 7.0 | 78.0 | 10.0 | 5.0 | 15.986 | O | 1 |
| A11256 | 6.0 | 79.0 | 10.0 | 5.0 | 15.685 | O | 1 |
| A11257 | 5.0 | 80.0 | 10.0 | 5.0 | 15.384 | O | 1 |
| A11258 | 4.0 | 81.0 | 10.0 | 5.0 | 15.083 | O | 1 |
| A11259 | 3.0 | 82.0 | 10.0 | 5.0 | 14.782 | O | 1 |
| A11260 | 2.0 | 83.0 | 10.0 | 5.0 | 14.482 | O | 1 |
| A11261 | 1.0 | 84.0 | 10.0 | 5.0 | 14.181 | O | 1 |
| A11262 | 0.0 | 85.0 | 10.0 | 5.0 | 13.857 | O | 1 |
| A11263 | 16.0 | 72.0 | 2.0 | 10.0 | 19.247 | X | 1 |
| A11264 | 15.2 | 72.8 | 2.0 | 10.0 | 19.007 | X | 1 |
| A11265 | 15.1 | 72.9 | 2.0 | 10.0 | 18.977 | O | 1 |
| A11266 | 15.0 | 73.0 | 2.0 | 10.0 | 18.947 | O | 1 |
| A11267 | 10.0 | 78.0 | 2.0 | 10.0 | 17.442 | O | 1 |
| A11268 | 9.0 | 79.0 | 2.0 | 10.0 | 17.142 | O | 1 |
| A11269 | 8.0 | 80.0 | 2.0 | 10.0 | 16.841 | O | 1 |
| A11270 | 7.0 | 81.0 | 2.0 | 10.0 | 16.540 | O | 1 |
| A11271 | 6.0 | 82.0 | 2.0 | 10.0 | 16.239 | O | 1 |
| A11272 | 5.0 | 83.0 | 2.0 | 10.0 | 15.938 | O | 1 |
| A11273 | 4.0 | 84.0 | 2.0 | 10.0 | 15.637 | O | 1 |
| A11274 | 3.0 | 85.0 | 2.0 | 10.0 | 15.337 | O | 1 |
| A11275 | 2.0 | 86.0 | 2.0 | 10.0 | 15.036 | O | 1 |
| A11276 | 1.0 | 87.0 | 2.0 | 10.0 | 14.735 | O | 1 |
| A11277 | 0.0 | 88.0 | 2.0 | 10.0 | 14.389 | O | 1 |
| A11278 | 17.0 | 69.0 | 4.0 | 10.0 | 19.223 | X | 1 |
| A11279 | 16.3 | 69.7 | 4.0 | 10.0 | 19.013 | X | 1 |
| A11280 | 16.2 | 69.8 | 4.0 | 10.0 | 18.982 | O | 1 |
| A11281 | 16.0 | 70.0 | 4.0 | 10.0 | 18.922 | O | 1 |
| A11282 | 15.0 | 71.0 | 4.0 | 10.0 | 18.621 | O | 1 |
| A11283 | 10.0 | 76.0 | 4.0 | 10.0 | 17.117 | O | 1 |
| A11284 | 9.0 | 77.0 | 4.0 | 10.0 | 16.816 | O | 1 |
| A11285 | 8.0 | 78.0 | 4.0 | 10.0 | 16.516 | O | 1 |
| A11286 | 7.0 | 79.0 | 4.0 | 10.0 | 16.215 | O | 1 |
| A11287 | 6.0 | 80.0 | 4.0 | 10.0 | 15.914 | O | 1 |
| A11288 | 5.0 | 81.0 | 4.0 | 10.0 | 15.613 | O | 1 |
| A11289 | 4.0 | 82.0 | 4.0 | 10.0 | 15.312 | O | 1 |

[Table 442]

| A11290 | 3.0 | 83.0 | 4.0 | 10.0 | 15.012 | O | 1 |
|--------|------|------|------|------|--------|---|---|
| A11291 | 2.0 | 84.0 | 4.0 | 10.0 | 14.711 | O | 1 |
| A11292 | 1.0 | 85.0 | 4.0 | 10.0 | 14.410 | O | 1 |
| A11293 | 0.0 | 86.0 | 4.0 | 10.0 | 14.064 | O | 1 |
| A11294 | 18.0 | 66.0 | 6.0 | 10.0 | 19.199 | X | 1 |
| A11295 | 17.4 | 66.6 | 6.0 | 10.0 | 19.018 | X | 1 |
| A11296 | 17.3 | 66.7 | 6.0 | 10.0 | 18.988 | O | 1 |
| A11297 | 17.0 | 67.0 | 6.0 | 10.0 | 18.898 | O | 1 |
| A11298 | 10.0 | 74.0 | 6.0 | 10.0 | 16.792 | O | 1 |
| A11299 | 9.0 | 75.0 | 6.0 | 10.0 | 16.491 | O | 1 |
| A11300 | 8.0 | 76.0 | 6.0 | 10.0 | 16.191 | O | 1 |
| A11301 | 7.0 | 77.0 | 6.0 | 10.0 | 15.890 | O | 1 |
| A11302 | 6.0 | 78.0 | 6.0 | 10.0 | 15.589 | O | 1 |
| A11303 | 5.0 | 79.0 | 6.0 | 10.0 | 15.288 | O | 1 |
| A11304 | 4.0 | 80.0 | 6.0 | 10.0 | 14.987 | O | 1 |
| A11305 | 3.0 | 81.0 | 6.0 | 10.0 | 14.686 | O | 1 |
| A11306 | 2.0 | 82.0 | 6.0 | 10.0 | 14.386 | O | 1 |
| A11307 | 1.0 | 83.0 | 6.0 | 10.0 | 14.085 | O | 1 |
| A11308 | 0.0 | 84.0 | 6.0 | 10.0 | 13.739 | O | 1 |
| A11309 | 19.0 | 63.0 | 8.0 | 10.0 | 19.175 | X | 1 |
| A11310 | 18.5 | 63.5 | 8.0 | 10.0 | 19.024 | X | 1 |
| A11311 | 18.4 | 63.6 | 8.0 | 10.0 | 18.994 | O | 1 |
| A11312 | 18.0 | 64.0 | 8.0 | 10.0 | 18.874 | O | 1 |
| A11313 | 15.0 | 67.0 | 8.0 | 10.0 | 17.971 | O | 1 |
| A11314 | 10.0 | 72.0 | 8.0 | 10.0 | 16.467 | O | 1 |
| A11315 | 9.0 | 73.0 | 8.0 | 10.0 | 16.166 | O | 1 |
| A11316 | 8.0 | 74.0 | 8.0 | 10.0 | 15.866 | O | 1 |
| A11317 | 7.0 | 75.0 | 8.0 | 10.0 | 15.565 | O | 1 |
| A11318 | 6.0 | 76.0 | 8.0 | 10.0 | 15.264 | O | 1 |
| A11319 | 5.0 | 77.0 | 8.0 | 10.0 | 14.963 | O | 1 |
| A11320 | 4.0 | 78.0 | 8.0 | 10.0 | 14.662 | O | 1 |
| A11321 | 3.0 | 79.0 | 8.0 | 10.0 | 14.361 | O | 1 |
| A11322 | 2.0 | 80.0 | 8.0 | 10.0 | 14.061 | O | 1 |
| A11323 | 1.0 | 81.0 | 8.0 | 10.0 | 13.760 | O | 1 |
| A11324 | 0.0 | 82.0 | 8.0 | 10.0 | 13.414 | O | 1 |
| A11325 | 20.0 | 60.0 | 10.0 | 10.0 | 19.151 | X | 1 |
| A11326 | 19.5 | 60.5 | 10.0 | 10.0 | 19.000 | X | 1 |
| A11327 | 19.4 | 60.6 | 10.0 | 10.0 | 18.970 | O | 1 |
| A11328 | 19.0 | 61.0 | 10.0 | 10.0 | 18.850 | O | 1 |
| A11329 | 15.0 | 65.0 | 10.0 | 10.0 | 17.646 | O | 1 |
| A11330 | 10.0 | 70.0 | 10.0 | 10.0 | 16.142 | O | 1 |
| A11331 | 9.0 | 71.0 | 10.0 | 10.0 | 15.841 | O | 1 |
| A11332 | 8.0 | 72.0 | 10.0 | 10.0 | 15.541 | O | 1 |
| A11333 | 7.0 | 73.0 | 10.0 | 10.0 | 15.240 | O | 1 |
| A11334 | 6.0 | 74.0 | 10.0 | 10.0 | 14.939 | O | 1 |
| A11335 | 5.0 | 75.0 | 10.0 | 10.0 | 14.638 | O | 1 |
| A11336 | 4.0 | 76.0 | 10.0 | 10.0 | 14.337 | O | 1 |
| A11337 | 3.0 | 77.0 | 10.0 | 10.0 | 14.036 | O | 1 |
| A11338 | 2.0 | 78.0 | 10.0 | 10.0 | 13.736 | O | 1 |
| A11339 | 1.0 | 79.0 | 10.0 | 10.0 | 13.435 | O | 1 |

[Table 443]

| A11340 | 0.0 | 80.0 | 10.0 | 10.0 | 13.088 | O | 1 |
|---|---|---|---|---|---|---|---|
| A11341 | 21.0 | 57.0 | 2.0 | 20.0 | 19.259 | X | 1 |
| A11342 | 20.2 | 57.8 | 2.0 | 20.0 | 19.019 | X | 1 |
| A11343 | 20.1 | 57.9 | 2.0 | 20.0 | 18.989 | O | 1 |
| A11344 | 20.0 | 58.0 | 2.0 | 20.0 | 18.959 | O | 1 |
| A11345 | 15.0 | 63.0 | 2.0 | 20.0 | 17.454 | O | 1 |
| A11346 | 10.0 | 68.0 | 2.0 | 20.0 | 15.950 | O | 1 |
| A11347 | 9.0 | 69.0 | 2.0 | 20.0 | 15.649 | O | 1 |
| A11348 | 8.0 | 70.0 | 2.0 | 20.0 | 15.349 | O | 1 |
| A11349 | 7.0 | 71.0 | 2.0 | 20.0 | 15.048 | O | 1 |
| A11350 | 6.0 | 72.0 | 2.0 | 20.0 | 14.747 | O | 1 |
| A11351 | 5.0 | 73.0 | 2.0 | 20.0 | 14.446 | O | 1 |
| A11352 | 4.0 | 74.0 | 2.0 | 20.0 | 14.145 | O | 1 |
| A11353 | 3.0 | 75.0 | 2.0 | 20.0 | 13.845 | O | 1 |
| A11354 | 2.0 | 76.0 | 2.0 | 20.0 | 13.544 | O | 1 |
| A11355 | 1.0 | 77.0 | 2.0 | 20.0 | 13.206 | O | 1 |
| A11356 | 0.0 | 78.0 | 2.0 | 20.0 | 12.851 | O | 1 |
| A11357 | 22.0 | 54.0 | 4.0 | 20.0 | 19.235 | X | 1 |
| A11358 | 21.3 | 54.7 | 4.0 | 20.0 | 19.025 | X | 1 |
| A11359 | 21.2 | 54.8 | 4.0 | 20.0 | 18.995 | O | 1 |
| A11360 | 21.0 | 55.0 | 4.0 | 20.0 | 18.934 | O | 1 |
| A11361 | 20.0 | 56.0 | 4.0 | 20.0 | 18.634 | O | 1 |
| A11362 | 15.0 | 61.0 | 4.0 | 20.0 | 17.129 | O | 1 |
| A11363 | 10.0 | 66.0 | 4.0 | 20.0 | 15.625 | O | 1 |
| A11364 | 9.0 | 67.0 | 4.0 | 20.0 | 15.324 | O | 1 |
| A11365 | 8.0 | 68.0 | 4.0 | 20.0 | 15.024 | O | 1 |
| A11366 | 7.0 | 69.0 | 4.0 | 20.0 | 14.723 | O | 1 |
| A11367 | 6.0 | 70.0 | 4.0 | 20.0 | 14.422 | O | 1 |
| A11368 | 5.0 | 71.0 | 4.0 | 20.0 | 14.121 | O | 1 |
| A11369 | 4.0 | 72.0 | 4.0 | 20.0 | 13.820 | O | 1 |
| A11370 | 3.0 | 73.0 | 4.0 | 20.0 | 13.519 | O | 1 |
| A11371 | 2.0 | 74.0 | 4.0 | 20.0 | 13.219 | O | 1 |
| A11372 | 1.0 | 75.0 | 4.0 | 20.0 | 12.881 | O | 1 |
| A11373 | 0.0 | 76.0 | 4.0 | 20.0 | 12.526 | O | 1 |
| A11374 | 23.0 | 51.0 | 6.0 | 20.0 | 19.211 | X | 1 |
| A11375 | 22.3 | 51.7 | 6.0 | 20.0 | 19.000 | X | 1 |
| A11376 | 22.2 | 51.8 | 6.0 | 20.0 | 18.970 | O | 1 |
| A11377 | 22.0 | 52.0 | 6.0 | 20.0 | 18.910 | O | 1 |
| A11378 | 20.0 | 54.0 | 6.0 | 20.0 | 18.309 | O | 1 |
| A11379 | 15.0 | 59.0 | 6.0 | 20.0 | 16.804 | O | 1 |
| A11380 | 10.0 | 64.0 | 6.0 | 20.0 | 15.300 | O | 1 |
| A11381 | 9.0 | 65.0 | 6.0 | 20.0 | 14.999 | O | 1 |
| A11382 | 8.0 | 66.0 | 6.0 | 20.0 | 14.699 | O | 1 |
| A11383 | 7.0 | 67.0 | 6.0 | 20.0 | 14.398 | O | 1 |
| A11384 | 6.0 | 68.0 | 6.0 | 20.0 | 14.097 | O | 1 |
| A11385 | 5.0 | 69.0 | 6.0 | 20.0 | 13.796 | O | 1 |
| A11386 | 4.0 | 70.0 | 6.0 | 20.0 | 13.495 | O | 1 |
| A11387 | 3.0 | 71.0 | 6.0 | 20.0 | 13.194 | O | 1 |
| A11388 | 2.0 | 72.0 | 6.0 | 20.0 | 12.894 | O | 1 |
| A11389 | 1.0 | 73.0 | 6.0 | 20.0 | 12.556 | O | 1 |

[Table 444]

| A11390 | 0.0 | 74.0 | 6.0 | 20.0 | 12.201 | O | 1 |
|---|---|---|---|---|---|---|---|
| A11391 | 24.0 | 48.0 | 8.0 | 20.0 | 19.187 | X | 1 |
| A11392 | 23.4 | 48.6 | 8.0 | 20.0 | 19.006 | X | 1 |
| A11393 | 23.3 | 48.7 | 8.0 | 20.0 | 18.976 | O | 1 |
| A11394 | 23.0 | 49.0 | 8.0 | 20.0 | 18.886 | O | 1 |
| A11395 | 20.0 | 52.0 | 8.0 | 20.0 | 17.984 | O | 1 |
| A11396 | 15.0 | 57.0 | 8.0 | 20.0 | 16.479 | O | 1 |
| A11397 | 10.0 | 62.0 | 8.0 | 20.0 | 14.975 | O | 1 |
| A11398 | 9.0 | 63.0 | 8.0 | 20.0 | 14.674 | O | 1 |
| A11399 | 8.0 | 64.0 | 8.0 | 20.0 | 14.374 | O | 1 |
| A11400 | 7.0 | 65.0 | 8.0 | 20.0 | 14.073 | O | 1 |
| A11401 | 6.0 | 66.0 | 8.0 | 20.0 | 13.772 | O | 1 |
| A11402 | 5.0 | 67.0 | 8.0 | 20.0 | 13.471 | O | 1 |
| A11403 | 4.0 | 68.0 | 8.0 | 20.0 | 13.170 | O | 1 |
| A11404 | 3.0 | 69.0 | 8.0 | 20.0 | 12.869 | O | 1 |
| A11405 | 2.0 | 70.0 | 8.0 | 20.0 | 12.569 | O | 1 |
| A11406 | 1.0 | 71.0 | 8.0 | 20.0 | 12.231 | O | 1 |
| A11407 | 0.0 | 72.0 | 8.0 | 20.0 | 11.876 | O | 1 |
| A11408 | 25.0 | 45.0 | 10.0 | 20.0 | 19.163 | X | 1 |
| A11409 | 24.5 | 45.5 | 10.0 | 20.0 | 19.012 | X | 1 |
| A11410 | 24.4 | 45.6 | 10.0 | 20.0 | 18.982 | O | 1 |
| A11411 | 24.0 | 46.0 | 10.0 | 20.0 | 18.862 | O | 1 |
| A11412 | 20.0 | 50.0 | 10.0 | 20.0 | 17.659 | O | 1 |
| A11413 | 15.0 | 55.0 | 10.0 | 20.0 | 16.154 | O | 1 |
| A11414 | 10.0 | 60.0 | 10.0 | 20.0 | 14.650 | O | 1 |
| A11415 | 9.0 | 61.0 | 10.0 | 20.0 | 14.349 | O | 1 |
| A11416 | 8.0 | 62.0 | 10.0 | 20.0 | 14.049 | O | 1 |
| A11417 | 7.0 | 63.0 | 10.0 | 20.0 | 13.748 | O | 1 |
| A11418 | 6.0 | 64.0 | 10.0 | 20.0 | 13.447 | O | 1 |
| A11419 | 5.0 | 65.0 | 10.0 | 20.0 | 13.146 | O | 1 |
| A11420 | 4.0 | 66.0 | 10.0 | 20.0 | 12.845 | O | 1 |
| A11421 | 3.0 | 67.0 | 10.0 | 20.0 | 12.544 | O | 1 |
| A11422 | 2.0 | 68.0 | 10.0 | 20.0 | 12.244 | O | 1 |
| A11423 | 1.0 | 69.0 | 10.0 | 20.0 | 11.906 | O | 1 |
| A11424 | 0.0 | 70.0 | 10.0 | 20.0 | 11.551 | O | 1 |
| A11425 | 26.0 | 42.0 | 2.0 | 30.0 | 19.272 | X | 1 |
| A11426 | 25.1 | 42.9 | 2.0 | 30.0 | 19.001 | X | 1 |
| A11427 | 25.0 | 43.0 | 2.0 | 30.0 | 18.971 | O | 1 |
| A11428 | 20.0 | 48.0 | 2.0 | 30.0 | 17.467 | O | 1 |
| A11429 | 15.0 | 53.0 | 2.0 | 30.0 | 15.962 | O | 1 |
| A11430 | 10.0 | 58.0 | 2.0 | 30.0 | 14.458 | O | 1 |
| A11431 | 9.0 | 59.0 | 2.0 | 30.0 | 14.157 | O | 1 |
| A11432 | 8.0 | 60.0 | 2.0 | 30.0 | 13.857 | O | 1 |
| A11433 | 7.0 | 61.0 | 2.0 | 30.0 | 13.556 | O | 1 |
| A11434 | 6.0 | 62.0 | 2.0 | 30.0 | 13.255 | O | 1 |
| A11435 | 5.0 | 63.0 | 2.0 | 30.0 | 12.954 | O | 1 |
| A11436 | 4.0 | 64.0 | 2.0 | 30.0 | 12.653 | O | 1 |
| A11437 | 3.0 | 65.0 | 2.0 | 30.0 | 12.352 | O | 1 |
| A11438 | 2.0 | 66.0 | 2.0 | 30.0 | 12.023 | O | 1 |
| A11439 | 1.0 | 67.0 | 2.0 | 30.0 | 11.668 | O | 1 |

[Table 445]

| | | | | | | |
|---|---|---|---|---|---|---|
| A11440 | 0.0 | 68.0 | 2.0 | 30.0 | 11.314 | O | 1 |
| A11441 | 27.0 | 39.0 | 4.0 | 30.0 | 19.247 | X | 1 |
| A11442 | 26.2 | 39.8 | 4.0 | 30.0 | 19.007 | X | 1 |
| A11443 | 26.1 | 39.9 | 4.0 | 30.0 | 18.977 | O | 1 |
| A11444 | 26.0 | 40.0 | 4.0 | 30.0 | 18.947 | O | 1 |
| A11445 | 20.0 | 46.0 | 4.0 | 30.0 | 17.142 | O | 1 |
| A11446 | 15.0 | 51.0 | 4.0 | 30.0 | 15.637 | O | 1 |
| A11447 | 10.0 | 56.0 | 4.0 | 30.0 | 14.133 | O | 1 |
| A11448 | 9.0 | 57.0 | 4.0 | 30.0 | 13.832 | O | 1 |
| A11449 | 8.0 | 58.0 | 4.0 | 30.0 | 13.532 | O | 1 |
| A11450 | 7.0 | 59.0 | 4.0 | 30.0 | 13.231 | O | 1 |
| A11451 | 6.0 | 60.0 | 4.0 | 30.0 | 12.930 | O | 1 |
| A11452 | 5.0 | 61.0 | 4.0 | 30.0 | 12.629 | O | 1 |
| A11453 | 4.0 | 62.0 | 4.0 | 30.0 | 12.328 | O | 1 |
| A11454 | 3.0 | 63.0 | 4.0 | 30.0 | 12.027 | O | 1 |
| A11455 | 2.0 | 64.0 | 4.0 | 30.0 | 11.698 | O | 1 |
| A11456 | 1.0 | 65.0 | 4.0 | 30.0 | 11.343 | O | 1 |
| A11457 | 0.0 | 66.0 | 4.0 | 30.0 | 10.989 | O | 1 |
| A11458 | 28.0 | 36.0 | 6.0 | 30.0 | 19.223 | X | 1 |
| A11459 | 27.3 | 36.7 | 6.0 | 30.0 | 19.013 | X | 1 |
| A11460 | 27.2 | 36.8 | 6.0 | 30.0 | 18.983 | O | 1 |
| A11461 | 27.0 | 37.0 | 6.0 | 30.0 | 18.922 | O | 1 |
| A11462 | 20.0 | 44.0 | 6.0 | 30.0 | 16.817 | O | 1 |
| A11463 | 15.0 | 49.0 | 6.0 | 30.0 | 15.312 | O | 1 |
| A11464 | 10.0 | 54.0 | 6.0 | 30.0 | 13.808 | O | 1 |
| A11465 | 9.0 | 55.0 | 6.0 | 30.0 | 13.507 | O | 1 |
| A11466 | 8.0 | 56.0 | 6.0 | 30.0 | 13.207 | O | 1 |
| A11467 | 7.0 | 57.0 | 6.0 | 30.0 | 12.906 | O | 1 |
| A11468 | 6.0 | 58.0 | 6.0 | 30.0 | 12.605 | O | 1 |
| A11469 | 5.0 | 59.0 | 6.0 | 30.0 | 12.304 | O | 1 |
| A11470 | 4.0 | 60.0 | 6.0 | 30.0 | 12.003 | O | 1 |
| A11471 | 3.0 | 61.0 | 6.0 | 30.0 | 11.702 | O | 1 |
| A11472 | 2.0 | 62.0 | 6.0 | 30.0 | 11.373 | O | 1 |
| A11473 | 1.0 | 63.0 | 6.0 | 30.0 | 11.018 | O | 1 |
| A11474 | 0.0 | 64.0 | 6.0 | 30.0 | 10.664 | O | 1 |
| A11475 | 29.0 | 33.0 | 8.0 | 30.0 | 19.199 | X | 1 |
| A11476 | 28.4 | 33.6 | 8.0 | 30.0 | 19.019 | X | 1 |
| A11477 | 28.3 | 33.7 | 8.0 | 30.0 | 18.988 | O | 1 |
| A11478 | 28.0 | 34.0 | 8.0 | 30.0 | 18.898 | O | 1 |
| A11479 | 20.0 | 42.0 | 8.0 | 30.0 | 16.492 | O | 1 |
| A11480 | 15.0 | 47.0 | 8.0 | 30.0 | 14.987 | O | 1 |
| A11481 | 10.0 | 52.0 | 8.0 | 30.0 | 13.483 | O | 1 |
| A11482 | 9.0 | 53.0 | 8.0 | 30.0 | 13.182 | O | 1 |
| A11483 | 8.0 | 54.0 | 8.0 | 30.0 | 12.882 | O | 1 |
| A11484 | 7.0 | 55.0 | 8.0 | 30.0 | 12.581 | O | 1 |
| A11485 | 6.0 | 56.0 | 8.0 | 30.0 | 12.280 | O | 1 |
| A11486 | 5.0 | 57.0 | 8.0 | 30.0 | 11.979 | O | 1 |
| A11487 | 4.0 | 58.0 | 8.0 | 30.0 | 11.678 | O | 1 |
| A11488 | 3.0 | 59.0 | 8.0 | 30.0 | 11.377 | O | 1 |
| A11489 | 2.0 | 60.0 | 8.0 | 30.0 | 11.048 | O | 1 |

[Table 446]

| A11490 | 1.0 | 61.0 | 8.0 | 30.0 | 10.693 | O | 1 |
|---|---|---|---|---|---|---|---|
| A11491 | 0.0 | 62.0 | 8.0 | 30.0 | 10.339 | O | 1 |
| A11492 | 30.0 | 30.0 | 10.0 | 30.0 | 19.175 | X | 1 |
| A11493 | 29.5 | 30.5 | 10.0 | 30.0 | 19.024 | X | 1 |
| A11494 | 29.4 | 30.6 | 10.0 | 30.0 | 18.994 | O | 1 |
| A11495 | 29.0 | 31.0 | 10.0 | 30.0 | 18.874 | O | 1 |
| A11496 | 20.0 | 40.0 | 10.0 | 30.0 | 16.167 | O | 1 |
| A11497 | 15.0 | 45.0 | 10.0 | 30.0 | 14.662 | O | 1 |
| A11498 | 10.0 | 50.0 | 10.0 | 30.0 | 13.158 | O | 1 |
| A11499 | 9.0 | 51.0 | 10.0 | 30.0 | 12.857 | O | 1 |
| A11500 | 8.0 | 52.0 | 10.0 | 30.0 | 12.557 | O | 1 |
| A11501 | 7.0 | 53.0 | 10.0 | 30.0 | 12.256 | O | 1 |
| A11502 | 6.0 | 54.0 | 10.0 | 30.0 | 11.955 | O | 1 |
| A11503 | 5.0 | 55.0 | 10.0 | 30.0 | 11.654 | O | 1 |
| A11504 | 4.0 | 56.0 | 10.0 | 30.0 | 11.353 | O | 1 |
| A11505 | 3.0 | 57.0 | 10.0 | 30.0 | 11.052 | O | 1 |
| A11506 | 2.0 | 58.0 | 10.0 | 30.0 | 10.723 | O | 1 |
| A11507 | 1.0 | 59.0 | 10.0 | 30.0 | 10.368 | O | 1 |
| A11508 | 0.0 | 60.0 | 10.0 | 30.0 | 10.014 | O | 1 |
| A11509 | 31.0 | 27.0 | 2.0 | 40.0 | 19.284 | X | 1 |
| A11510 | 30.1 | 27.9 | 2.0 | 40.0 | 19.013 | X | 1 |
| A11511 | 30.0 | 28.0 | 2.0 | 40.0 | 18.983 | O | 1 |
| A11512 | 20.0 | 38.0 | 2.0 | 40.0 | 15.975 | O | 1 |
| A11513 | 15.0 | 43.0 | 2.0 | 40.0 | 14.470 | O | 1 |
| A11514 | 10.0 | 48.0 | 2.0 | 40.0 | 12.966 | O | 1 |
| A11515 | 9.0 | 49.0 | 2.0 | 40.0 | 12.665 | O | 1 |
| A11516 | 8.0 | 50.0 | 2.0 | 40.0 | 12.365 | O | 1 |
| A11517 | 7.0 | 51.0 | 2.0 | 40.0 | 12.064 | O | 1 |
| A11518 | 6.0 | 52.0 | 2.0 | 40.0 | 11.763 | O | 1 |
| A11519 | 5.0 | 53.0 | 2.0 | 40.0 | 11.462 | O | 1 |
| A11520 | 4.0 | 54.0 | 2.0 | 40.0 | 11.161 | O | 1 |
| A11521 | 3.0 | 55.0 | 2.0 | 40.0 | 10.840 | O | 1 |
| A11522 | 2.0 | 56.0 | 2.0 | 40.0 | 10.485 | O | 1 |
| A11523 | 1.0 | 57.0 | 2.0 | 40.0 | 10.131 | O | 1 |
| A11524 | 0.0 | 58.0 | 2.0 | 40.0 | 9.776 | O | 1 |
| A11525 | 32.0 | 24.0 | 4.0 | 40.0 | 19.260 | X | 1 |
| A11526 | 31.2 | 24.8 | 4.0 | 40.0 | 19.019 | X | 1 |
| A11527 | 31.1 | 24.9 | 4.0 | 40.0 | 18.989 | O | 1 |
| A11528 | 31.0 | 25.0 | 4.0 | 40.0 | 18.959 | O | 1 |
| A11529 | 30.0 | 26.0 | 4.0 | 40.0 | 18.658 | O | 1 |
| A11530 | 20.0 | 36.0 | 4.0 | 40.0 | 15.650 | O | 1 |
| A11531 | 15.0 | 41.0 | 4.0 | 40.0 | 14.145 | O | 1 |
| A11532 | 10.0 | 46.0 | 4.0 | 40.0 | 12.641 | O | 1 |
| A11533 | 9.0 | 47.0 | 4.0 | 40.0 | 12.340 | O | 1 |
| A11534 | 8.0 | 48.0 | 4.0 | 40.0 | 12.040 | O | 1 |
| A11535 | 7.0 | 49.0 | 4.0 | 40.0 | 11.739 | O | 1 |
| A11536 | 6.0 | 50.0 | 4.0 | 40.0 | 11.438 | O | 1 |
| A11537 | 5.0 | 51.0 | 4.0 | 40.0 | 11.137 | O | 1 |
| A11538 | 4.0 | 52.0 | 4.0 | 40.0 | 10.836 | O | 1 |
| A11539 | 3.0 | 53.0 | 4.0 | 40.0 | 10.515 | O | 1 |

[Table 447]

| A11540 | 2.0 | 54.0 | 4.0 | 40.0 | 10.160 | O | 1 |
|---|---|---|---|---|---|---|---|
| A11541 | 1.0 | 55.0 | 4.0 | 40.0 | 9.806 | O | 1 |
| A11542 | 0.0 | 56.0 | 4.0 | 40.0 | 9.451 | O | 1 |
| A11543 | 33.0 | 21.0 | 6.0 | 40.0 | 19.235 | X | 1 |
| A11544 | 32.3 | 21.7 | 6.0 | 40.0 | 19.025 | X | 1 |
| A11545 | 32.2 | 21.8 | 6.0 | 40.0 | 18.995 | O | 1 |
| A11546 | 32.0 | 22.0 | 6.0 | 40.0 | 18.934 | O | 1 |
| A11547 | 30.0 | 24.0 | 6.0 | 40.0 | 18.333 | O | 1 |
| A11548 | 20.0 | 34.0 | 6.0 | 40.0 | 15.325 | O | 1 |
| A11549 | 15.0 | 39.0 | 6.0 | 40.0 | 13.820 | O | 1 |
| A11550 | 10.0 | 44.0 | 6.0 | 40.0 | 12.316 | O | 1 |
| A11551 | 9.0 | 45.0 | 6.0 | 40.0 | 12.015 | O | 1 |
| A11552 | 8.0 | 46.0 | 6.0 | 40.0 | 11.715 | O | 1 |
| A11553 | 7.0 | 47.0 | 6.0 | 40.0 | 11.414 | O | 1 |
| A11554 | 6.0 | 48.0 | 6.0 | 40.0 | 11.113 | O | 1 |
| A11555 | 5.0 | 49.0 | 6.0 | 40.0 | 10.812 | O | 1 |
| A11556 | 4.0 | 50.0 | 6.0 | 40.0 | 10.511 | O | 1 |
| A11557 | 3.0 | 51.0 | 6.0 | 40.0 | 10.190 | O | 1 |
| A11558 | 2.0 | 52.0 | 6.0 | 40.0 | 9.835 | O | 1 |
| A11559 | 1.0 | 53.0 | 6.0 | 40.0 | 9.481 | O | 1 |
| A11560 | 0.0 | 54.0 | 6.0 | 40.0 | 9.126 | O | 1 |
| A11561 | 34.0 | 18.0 | 8.0 | 40.0 | 19.211 | X | 1 |
| A11562 | 33.3 | 18.7 | 8.0 | 40.0 | 19.001 | X | 1 |
| A11563 | 33.2 | 18.8 | 8.0 | 40.0 | 18.970 | O | 1 |
| A11564 | 33.0 | 19.0 | 8.0 | 40.0 | 18.910 | O | 1 |
| A11565 | 30.0 | 22.0 | 8.0 | 40.0 | 18.008 | O | 1 |
| A11566 | 20.0 | 32.0 | 8.0 | 40.0 | 15.000 | O | 1 |
| A11567 | 15.0 | 37.0 | 8.0 | 40.0 | 13.495 | O | 1 |
| A11568 | 10.0 | 42.0 | 8.0 | 40.0 | 11.991 | O | 1 |
| A11569 | 9.0 | 43.0 | 8.0 | 40.0 | 11.690 | O | 1 |
| A11570 | 8.0 | 44.0 | 8.0 | 40.0 | 11.390 | O | 1 |
| A11571 | 7.0 | 45.0 | 8.0 | 40.0 | 11.089 | O | 1 |
| A11572 | 6.0 | 46.0 | 8.0 | 40.0 | 10.788 | O | 1 |
| A11573 | 5.0 | 47.0 | 8.0 | 40.0 | 10.487 | O | 1 |
| A11574 | 4.0 | 48.0 | 8.0 | 40.0 | 10.186 | O | 1 |
| A11575 | 3.0 | 49.0 | 8.0 | 40.0 | 9.865 | O | 1 |
| A11576 | 2.0 | 50.0 | 8.0 | 40.0 | 9.510 | O | 1 |
| A11577 | 1.0 | 51.0 | 8.0 | 40.0 | 9.156 | O | 1 |
| A11578 | 0.0 | 52.0 | 8.0 | 40.0 | 8.801 | O | 1 |
| A11579 | 35.0 | 15.0 | 10.0 | 40.0 | 19.187 | X | 1 |
| A11580 | 34.4 | 15.6 | 10.0 | 40.0 | 19.006 | X | 1 |
| A11581 | 34.3 | 15.7 | 10.0 | 40.0 | 18.976 | O | 1 |
| A11582 | 34.0 | 16.0 | 10.0 | 40.0 | 18.886 | O | 1 |
| A11583 | 30.0 | 20.0 | 10.0 | 40.0 | 17.683 | O | 1 |
| A11584 | 20.0 | 30.0 | 10.0 | 40.0 | 14.674 | O | 1 |
| A11585 | 15.0 | 35.0 | 10.0 | 40.0 | 13.170 | O | 1 |
| A11586 | 10.0 | 40.0 | 10.0 | 40.0 | 11.666 | O | 1 |
| A11587 | 9.0 | 41.0 | 10.0 | 40.0 | 11.365 | O | 1 |
| A11588 | 8.0 | 42.0 | 10.0 | 40.0 | 11.065 | O | 1 |
| A11589 | 7.0 | 43.0 | 10.0 | 40.0 | 10.764 | O | 1 |

[Table 448]

| A11590 | 6.0 | 44.0 | 10.0 | 40.0 | 10.463 | O | 1 |
|--------|-----|------|------|------|--------|---|---|
| A11591 | 5.0 | 45.0 | 10.0 | 40.0 | 10.162 | O | 1 |
| A11592 | 4.0 | 46.0 | 10.0 | 40.0 | 9.861 | O | 1 |
| A11593 | 3.0 | 47.0 | 10.0 | 40.0 | 9.540 | O | 1 |
| A11594 | 2.0 | 48.0 | 10.0 | 40.0 | 9.185 | O | 1 |
| A11595 | 1.0 | 49.0 | 10.0 | 40.0 | 8.831 | O | 1 |
| A11596 | 0.0 | 50.0 | 10.0 | 40.0 | 8.476 | O | 1 |
| A11597 | 36.0 | 12.0 | 2.0 | 50.0 | 19.296 | X | 1 |
| A11598 | 35.1 | 12.9 | 2.0 | 50.0 | 19.025 | X | 1 |
| A11599 | 35.0 | 13.0 | 2.0 | 50.0 | 18.995 | O | 1 |
| A11600 | 30.0 | 18.0 | 2.0 | 50.0 | 17.491 | O | 1 |
| A11601 | 20.0 | 28.0 | 2.0 | 50.0 | 14.483 | O | 1 |
| A11602 | 15.0 | 33.0 | 2.0 | 50.0 | 12.978 | O | 1 |
| A11603 | 10.0 | 38.0 | 2.0 | 50.0 | 11.474 | O | 1 |
| A11604 | 9.0 | 39.0 | 2.0 | 50.0 | 11.173 | O | 1 |
| A11605 | 8.0 | 40.0 | 2.0 | 50.0 | 10.873 | O | 1 |
| A11606 | 7.0 | 41.0 | 2.0 | 50.0 | 10.572 | O | 1 |
| A11607 | 6.0 | 42.0 | 2.0 | 50.0 | 10.271 | O | 1 |
| A11608 | 5.0 | 43.0 | 2.0 | 50.0 | 9.970 | O | 1 |
| A11609 | 4.0 | 44.0 | 2.0 | 50.0 | 9.657 | O | 1 |
| A11610 | 3.0 | 45.0 | 2.0 | 50.0 | 9.303 | O | 1 |
| A11611 | 2.0 | 46.0 | 2.0 | 50.0 | 8.948 | O | 1 |
| A11612 | 1.0 | 47.0 | 2.0 | 50.0 | 8.593 | O | 1 |
| A11613 | 0.0 | 48.0 | 2.0 | 50.0 | 8.239 | O | 1 |
| A11614 | 37.0 | 9.0 | 4.0 | 50.0 | 19.272 | X | 1 |
| A11615 | 36.1 | 9.9 | 4.0 | 50.0 | 19.001 | X | 1 |
| A11616 | 36.0 | 10.0 | 4.0 | 50.0 | 18.971 | O | 1 |
| A11617 | 30.0 | 16.0 | 4.0 | 50.0 | 17.166 | O | 1 |
| A11618 | 20.0 | 26.0 | 4.0 | 50.0 | 14.158 | O | 1 |
| A11619 | 15.0 | 31.0 | 4.0 | 50.0 | 12.653 | O | 1 |
| A11620 | 10.0 | 36.0 | 4.0 | 50.0 | 11.149 | O | 1 |
| A11621 | 9.0 | 37.0 | 4.0 | 50.0 | 10.848 | O | 1 |
| A11622 | 8.0 | 38.0 | 4.0 | 50.0 | 10.548 | O | 1 |
| A11623 | 7.0 | 39.0 | 4.0 | 50.0 | 10.247 | O | 1 |
| A11624 | 6.0 | 40.0 | 4.0 | 50.0 | 9.946 | O | 1 |
| A11625 | 5.0 | 41.0 | 4.0 | 50.0 | 9.645 | O | 1 |
| A11626 | 4.0 | 42.0 | 4.0 | 50.0 | 9.332 | O | 1 |
| A11627 | 3.0 | 43.0 | 4.0 | 50.0 | 8.978 | O | 1 |
| A11628 | 2.0 | 44.0 | 4.0 | 50.0 | 8.623 | O | 1 |
| A11629 | 1.0 | 45.0 | 4.0 | 50.0 | 8.268 | O | 1 |
| A11630 | 0.0 | 46.0 | 4.0 | 50.0 | 7.914 | O | 1 |
| A11631 | 38.0 | 6.0 | 6.0 | 50.0 | 19.247 | X | 1 |
| A11632 | 37.2 | 6.8 | 6.0 | 50.0 | 19.007 | X | 1 |
| A11633 | 37.1 | 6.9 | 6.0 | 50.0 | 18.977 | O | 1 |
| A11634 | 37.0 | 7.0 | 6.0 | 50.0 | 18.947 | O | 1 |
| A11635 | 30.0 | 14.0 | 6.0 | 50.0 | 16.841 | O | 1 |
| A11636 | 20.0 | 24.0 | 6.0 | 50.0 | 13.832 | O | 1 |
| A11637 | 15.0 | 29.0 | 6.0 | 50.0 | 12.328 | O | 1 |
| A11638 | 10.0 | 34.0 | 6.0 | 50.0 | 10.824 | O | 1 |
| A11639 | 9.0 | 35.0 | 6.0 | 50.0 | 10.523 | O | 1 |

[Table 449]

| | | | | | | | |
|---|---|---|---|---|---|---|---|
| A11640 | 8.0 | 36.0 | 6.0 | 50.0 | 10.223 | O | 1 |
| A11641 | 7.0 | 37.0 | 6.0 | 50.0 | 9.922 | O | 1 |
| A11642 | 6.0 | 38.0 | 6.0 | 50.0 | 9.621 | O | 1 |
| A11643 | 5.0 | 39.0 | 6.0 | 50.0 | 9.320 | O | 1 |
| A11644 | 4.0 | 40.0 | 6.0 | 50.0 | 9.007 | O | 1 |
| A11645 | 3.0 | 41.0 | 6.0 | 50.0 | 8.653 | O | 1 |
| A11646 | 2.0 | 42.0 | 6.0 | 50.0 | 8.298 | O | 1 |
| A11647 | 1.0 | 43.0 | 6.0 | 50.0 | 7.943 | O | 1 |
| A11648 | 0.0 | 44.0 | 6.0 | 50.0 | 7.589 | O | 1 |
| A11649 | 39.0 | 3.0 | 8.0 | 50.0 | 19.223 | X | 1 |
| A11650 | 38.3 | 3.7 | 8.0 | 50.0 | 19.013 | X | 1 |
| A11651 | 38.2 | 3.8 | 8.0 | 50.0 | 18.983 | O | 1 |
| A11652 | 38.0 | 4.0 | 8.0 | 50.0 | 18.922 | O | 1 |
| A11653 | 30.0 | 12.0 | 8.0 | 50.0 | 16.516 | O | 1 |
| A11654 | 20.0 | 22.0 | 8.0 | 50.0 | 13.507 | O | 1 |
| A11655 | 15.0 | 27.0 | 8.0 | 50.0 | 12.003 | O | 1 |
| A11656 | 10.0 | 32.0 | 8.0 | 50.0 | 10.499 | O | 1 |
| A11657 | 9.0 | 33.0 | 8.0 | 50.0 | 10.198 | O | 1 |
| A11658 | 8.0 | 34.0 | 8.0 | 50.0 | 9.898 | O | 1 |
| A11659 | 7.0 | 35.0 | 8.0 | 50.0 | 9.597 | O | 1 |
| A11660 | 6.0 | 36.0 | 8.0 | 50.0 | 9.296 | O | 1 |
| A11661 | 5.0 | 37.0 | 8.0 | 50.0 | 8.995 | O | 1 |
| A11662 | 4.0 | 38.0 | 8.0 | 50.0 | 8.682 | O | 1 |
| A11663 | 3.0 | 39.0 | 8.0 | 50.0 | 8.328 | O | 1 |
| A11664 | 2.0 | 40.0 | 8.0 | 50.0 | 7.973 | O | 1 |
| A11665 | 1.0 | 41.0 | 8.0 | 50.0 | 7.618 | O | 1 |
| A11666 | 0.0 | 42.0 | 8.0 | 50.0 | 7.264 | O | 1 |
| A11667 | 40.0 | 0.0 | 10.0 | 50.0 | 19.199 | X | 1 |
| A11668 | 39.4 | 0.6 | 10.0 | 50.0 | 19.019 | X | 1 |
| A11669 | 39.3 | 0.7 | 10.0 | 50.0 | 18.988 | O | 1 |
| A11670 | 39.0 | 1.0 | 10.0 | 50.0 | 18.898 | O | 1 |
| A11671 | 30.0 | 10.0 | 10.0 | 50.0 | 16.191 | O | 1 |
| A11672 | 20.0 | 20.0 | 10.0 | 50.0 | 13.182 | O | 1 |
| A11673 | 15.0 | 25.0 | 10.0 | 50.0 | 11.678 | O | 1 |
| A11674 | 10.0 | 30.0 | 10.0 | 50.0 | 10.174 | O | 1 |
| A11675 | 9.0 | 31.0 | 10.0 | 50.0 | 9.873 | O | 1 |
| A11676 | 8.0 | 32.0 | 10.0 | 50.0 | 9.572 | O | 1 |
| A11677 | 7.0 | 33.0 | 10.0 | 50.0 | 9.272 | O | 1 |
| A11678 | 6.0 | 34.0 | 10.0 | 50.0 | 8.971 | O | 1 |
| A11679 | 5.0 | 35.0 | 10.0 | 50.0 | 8.670 | O | 1 |
| A11680 | 4.0 | 36.0 | 10.0 | 50.0 | 8.357 | O | 1 |
| A11681 | 3.0 | 37.0 | 10.0 | 50.0 | 8.003 | O | 1 |
| A11682 | 2.0 | 38.0 | 10.0 | 50.0 | 7.648 | O | 1 |
| A11683 | 1.0 | 39.0 | 10.0 | 50.0 | 7.293 | O | 1 |
| A11684 | 0.0 | 40.0 | 10.0 | 50.0 | 6.939 | O | 1 |

Tables 450 to 458 show the composition, combustion heat amount, and GWP of the working medium of a four-component system of propane, HFO-1123, HFO-1132(E), and HFO-1234yf.

[Table 450]

| Case | propane | HFO-1123 | HFO-1132(E) | HFO-1234yf | Heat of Combustion | Evaluation | GWP |
|------|---------|----------|-------------|------------|--------------------|-----------|-----|
| A11685 | 22.0 | 58.0 | 10.0 | 10.0 | 19.122 | X | 1 |
| A11686 | 21.7 | 58.3 | 10.0 | 10.0 | 19.015 | X | 1 |
| A11687 | 21.6 | 58.4 | 10.0 | 10.0 | 18.980 | O | 1 |
| A11688 | 21.0 | 59.0 | 10.0 | 10.0 | 18.766 | O | 1 |
| A11689 | 20.0 | 60.0 | 10.0 | 10.0 | 18.409 | O | 1 |
| A11690 | 15.0 | 65.0 | 10.0 | 10.0 | 16.625 | O | 1 |
| A11691 | 10.0 | 70.0 | 10.0 | 10.0 | 14.820 | O | 1 |
| A11692 | 9.0 | 71.0 | 10.0 | 10.0 | 14.403 | O | 1 |
| A11693 | 8.0 | 72.0 | 10.0 | 10.0 | 13.985 | O | 1 |
| A11694 | 7.0 | 73.0 | 10.0 | 10.0 | 13.567 | O | 1 |
| A11695 | 6.0 | 74.0 | 10.0 | 10.0 | 13.149 | O | 1 |
| A11696 | 5.0 | 75.0 | 10.0 | 10.0 | 12.731 | O | 1 |
| A11697 | 4.0 | 76.0 | 10.0 | 10.0 | 12.313 | O | 1 |
| A11698 | 3.0 | 77.0 | 10.0 | 10.0 | 11.895 | O | 1 |
| A11699 | 2.0 | 78.0 | 10.0 | 10.0 | 11.477 | O | 1 |
| A11700 | 1.0 | 79.0 | 10.0 | 10.0 | 11.059 | O | 1 |
| A11701 | 0.0 | 80.0 | 10.0 | 10.0 | 10.641 | O | 1 |
| A11702 | 21.0 | 49.0 | 20.0 | 10.0 | 19.325 | X | 1 |
| A11703 | 20.1 | 49.9 | 20.0 | 10.0 | 19.004 | X | 1 |
| A11704 | 20.0 | 50.0 | 20.0 | 10.0 | 18.969 | O | 1 |
| A11705 | 15.0 | 55.0 | 20.0 | 10.0 | 17.185 | O | 1 |
| A11706 | 10.0 | 60.0 | 20.0 | 10.0 | 15.400 | O | 1 |
| A11707 | 9.0 | 61.0 | 20.0 | 10.0 | 15.035 | O | 1 |
| A11708 | 8.0 | 62.0 | 20.0 | 10.0 | 14.617 | O | 1 |
| A11709 | 7.0 | 63.0 | 20.0 | 10.0 | 14.199 | O | 1 |
| A11710 | 6.0 | 64.0 | 20.0 | 10.0 | 13.781 | O | 1 |
| A11711 | 5.0 | 65.0 | 20.0 | 10.0 | 13.363 | O | 1 |
| A11712 | 4.0 | 66.0 | 20.0 | 10.0 | 12.945 | O | 1 |
| A11713 | 3.0 | 67.0 | 20.0 | 10.0 | 12.527 | O | 1 |
| A11714 | 2.0 | 68.0 | 20.0 | 10.0 | 12.109 | O | 1 |
| A11715 | 1.0 | 69.0 | 20.0 | 10.0 | 11.691 | O | 1 |
| A11716 | 0.0 | 70.0 | 20.0 | 10.0 | 11.274 | O | 1 |
| A11717 | 19.0 | 41.0 | 30.0 | 10.0 | 19.172 | X | 1 |
| A11718 | 18.6 | 41.4 | 30.0 | 10.0 | 19.029 | X | 1 |
| A11719 | 18.5 | 41.5 | 30.0 | 10.0 | 18.993 | O | 1 |
| A11720 | 18.0 | 42.0 | 30.0 | 10.0 | 18.815 | O | 1 |
| A11721 | 15.0 | 45.0 | 30.0 | 10.0 | 17.744 | O | 1 |
| A11722 | 10.0 | 50.0 | 30.0 | 10.0 | 15.960 | O | 1 |
| A11723 | 9.0 | 51.0 | 30.0 | 10.0 | 15.604 | O | 1 |
| A11724 | 8.0 | 52.0 | 30.0 | 10.0 | 15.247 | O | 1 |
| A11725 | 7.0 | 53.0 | 30.0 | 10.0 | 14.831 | O | 1 |
| A11726 | 6.0 | 54.0 | 30.0 | 10.0 | 14.413 | O | 1 |
| A11727 | 5.0 | 55.0 | 30.0 | 10.0 | 13.995 | O | 1 |
| A11728 | 4.0 | 56.0 | 30.0 | 10.0 | 13.577 | O | 1 |
| A11729 | 3.0 | 57.0 | 30.0 | 10.0 | 13.160 | O | 1 |
| A11730 | 2.0 | 58.0 | 30.0 | 10.0 | 12.742 | O | 1 |
| A11731 | 1.0 | 59.0 | 30.0 | 10.0 | 12.324 | O | 1 |
| A11732 | 0.0 | 60.0 | 30.0 | 10.0 | 11.906 | O | 1 |
| A11733 | 17.0 | 33.0 | 40.0 | 10.0 | 19.018 | X | 1 |
| A11734 | 16.9 | 33.1 | 40.0 | 10.0 | 18.982 | O | 1 |

[Table 451]

| | | | | | | | |
|---|---|---|---|---|---|---|---|
| A11735 | 16.0 | 34.0 | 40.0 | 10.0 | 18.661 | O | 1 |
| A11736 | 15.0 | 35.0 | 40.0 | 10.0 | 18.304 | O | 1 |
| A11737 | 10.0 | 40.0 | 40.0 | 10.0 | 16.520 | O | 1 |
| A11738 | 9.0 | 41.0 | 40.0 | 10.0 | 16.163 | O | 1 |
| A11739 | 8.0 | 42.0 | 40.0 | 10.0 | 15.807 | O | 1 |
| A11740 | 7.0 | 43.0 | 40.0 | 10.0 | 15.450 | O | 1 |
| A11741 | 6.0 | 44.0 | 40.0 | 10.0 | 15.045 | O | 1 |
| A11742 | 5.0 | 45.0 | 40.0 | 10.0 | 14.628 | O | 1 |
| A11743 | 4.0 | 46.0 | 40.0 | 10.0 | 14.210 | O | 1 |
| A11744 | 3.0 | 47.0 | 40.0 | 10.0 | 13.792 | O | 1 |
| A11745 | 2.0 | 48.0 | 40.0 | 10.0 | 13.374 | O | 1 |
| A11746 | 1.0 | 49.0 | 40.0 | 10.0 | 12.956 | O | 1 |
| A11747 | 0.0 | 50.0 | 40.0 | 10.0 | 12.538 | O | 1 |
| A11748 | 16.0 | 24.0 | 50.0 | 10.0 | 19.221 | X | 1 |
| A11749 | 15.4 | 24.6 | 50.0 | 10.0 | 19.007 | X | 1 |
| A11750 | 15.3 | 24.7 | 50.0 | 10.0 | 18.971 | O | 1 |
| A11751 | 15.0 | 25.0 | 50.0 | 10.0 | 18.864 | O | 1 |
| A11752 | 10.0 | 30.0 | 50.0 | 10.0 | 17.080 | O | 1 |
| A11753 | 9.0 | 31.0 | 50.0 | 10.0 | 16.723 | O | 1 |
| A11754 | 8.0 | 32.0 | 50.0 | 10.0 | 16.366 | O | 1 |
| A11755 | 7.0 | 33.0 | 50.0 | 10.0 | 16.010 | O | 1 |
| A11756 | 6.0 | 34.0 | 50.0 | 10.0 | 15.653 | O | 1 |
| A11757 | 5.0 | 35.0 | 50.0 | 10.0 | 15.260 | O | 1 |
| A11758 | 4.0 | 36.0 | 50.0 | 10.0 | 14.842 | O | 1 |
| A11759 | 3.0 | 37.0 | 50.0 | 10.0 | 14.424 | O | 1 |
| A11760 | 2.0 | 38.0 | 50.0 | 10.0 | 14.006 | O | 1 |
| A11761 | 1.0 | 39.0 | 50.0 | 10.0 | 13.588 | O | 1 |
| A11762 | 0.0 | 40.0 | 50.0 | 10.0 | 13.170 | O | 1 |
| A11763 | 14.0 | 16.0 | 60.0 | 10.0 | 19.067 | X | 1 |
| A11764 | 13.9 | 16.1 | 60.0 | 10.0 | 19.031 | X | 1 |
| A11765 | 13.8 | 16.2 | 60.0 | 10.0 | 18.996 | O | 1 |
| A11766 | 13.0 | 17.0 | 60.0 | 10.0 | 18.710 | O | 1 |
| A11767 | 10.0 | 20.0 | 60.0 | 10.0 | 17.640 | O | 1 |
| A11768 | 9.0 | 21.0 | 60.0 | 10.0 | 17.283 | O | 1 |
| A11769 | 8.0 | 22.0 | 60.0 | 10.0 | 16.926 | O | 1 |
| A11770 | 7.0 | 23.0 | 60.0 | 10.0 | 16.569 | O | 1 |
| A11771 | 6.0 | 24.0 | 60.0 | 10.0 | 16.213 | O | 1 |
| A11772 | 5.0 | 25.0 | 60.0 | 10.0 | 15.856 | O | 1 |
| A11773 | 4.0 | 26.0 | 60.0 | 10.0 | 15.474 | O | 1 |
| A11774 | 3.0 | 27.0 | 60.0 | 10.0 | 15.056 | O | 1 |
| A11775 | 2.0 | 28.0 | 60.0 | 10.0 | 14.638 | O | 1 |
| A11776 | 1.0 | 29.0 | 60.0 | 10.0 | 14.220 | O | 1 |
| A11777 | 0.0 | 30.0 | 60.0 | 10.0 | 13.802 | O | 1 |
| A11778 | 13.0 | 7.0 | 70.0 | 10.0 | 19.270 | X | 1 |
| A11779 | 12.3 | 7.7 | 70.0 | 10.0 | 19.020 | X | 1 |
| A11780 | 12.2 | 7.8 | 70.0 | 10.0 | 18.985 | O | 1 |
| A11781 | 12.0 | 8.0 | 70.0 | 10.0 | 18.913 | O | 1 |
| A11782 | 10.0 | 10.0 | 70.0 | 10.0 | 18.200 | O | 1 |
| A11783 | 9.0 | 11.0 | 70.0 | 10.0 | 17.843 | O | 1 |
| A11784 | 8.0 | 12.0 | 70.0 | 10.0 | 17.486 | O | 1 |

[Table 452]

| A11785 | 7.0 | 13.0 | 70.0 | 10.0 | 17.129 | O | 1 |
|---|---|---|---|---|---|---|---|
| A11786 | 6.0 | 14.0 | 70.0 | 10.0 | 16.772 | O | 1 |
| A11787 | 5.0 | 15.0 | 70.0 | 10.0 | 16.416 | O | 1 |
| A11788 | 4.0 | 16.0 | 70.0 | 10.0 | 16.059 | O | 1 |
| A11789 | 3.0 | 17.0 | 70.0 | 10.0 | 15.688 | O | 1 |
| A11790 | 2.0 | 18.0 | 70.0 | 10.0 | 15.271 | O | 1 |
| A11791 | 1.0 | 19.0 | 70.0 | 10.0 | 14.853 | O | 1 |
| A11792 | 0.0 | 20.0 | 70.0 | 10.0 | 14.435 | O | 1 |
| A11793 | 22.0 | 48.0 | 10.0 | 20.0 | 19.182 | X | 1 |
| A11794 | 21.5 | 48.5 | 10.0 | 20.0 | 19.004 | X | 1 |
| A11795 | 21.4 | 48.6 | 10.0 | 20.0 | 18.968 | O | 1 |
| A11796 | 21.0 | 49.0 | 10.0 | 20.0 | 18.826 | O | 1 |
| A11797 | 20.0 | 50.0 | 10.0 | 20.0 | 18.469 | O | 1 |
| A11798 | 15.0 | 55.0 | 10.0 | 20.0 | 16.685 | O | 1 |
| A11799 | 10.0 | 60.0 | 10.0 | 20.0 | 14.901 | O | 1 |
| A11800 | 9.0 | 61.0 | 10.0 | 20.0 | 14.483 | O | 1 |
| A11801 | 8.0 | 62.0 | 10.0 | 20.0 | 14.065 | O | 1 |
| A11802 | 7.0 | 63.0 | 10.0 | 20.0 | 13.647 | O | 1 |
| A11803 | 6.0 | 64.0 | 10.0 | 20.0 | 13.229 | O | 1 |
| A11804 | 5.0 | 65.0 | 10.0 | 20.0 | 12.811 | O | 1 |
| A11805 | 4.0 | 66.0 | 10.0 | 20.0 | 12.393 | O | 1 |
| A11806 | 3.0 | 67.0 | 10.0 | 20.0 | 11.975 | O | 1 |
| A11807 | 2.0 | 68.0 | 10.0 | 20.0 | 11.557 | O | 1 |
| A11808 | 1.0 | 69.0 | 10.0 | 20.0 | 11.139 | O | 1 |
| A11809 | 0.0 | 70.0 | 10.0 | 20.0 | 10.722 | O | 1 |
| A11810 | 20.0 | 40.0 | 20.0 | 20.0 | 19.029 | X | 1 |
| A11811 | 19.9 | 40.1 | 20.0 | 20.0 | 18.993 | O | 1 |
| A11812 | 19.0 | 41.0 | 20.0 | 20.0 | 18.672 | O | 1 |
| A11813 | 15.0 | 45.0 | 20.0 | 20.0 | 17.245 | O | 1 |
| A11814 | 10.0 | 50.0 | 20.0 | 20.0 | 15.460 | O | 1 |
| A11815 | 9.0 | 51.0 | 20.0 | 20.0 | 15.104 | O | 1 |
| A11816 | 8.0 | 52.0 | 20.0 | 20.0 | 14.697 | O | 1 |
| A11817 | 7.0 | 53.0 | 20.0 | 20.0 | 14.279 | O | 1 |
| A11818 | 6.0 | 54.0 | 20.0 | 20.0 | 13.861 | O | 1 |
| A11819 | 5.0 | 55.0 | 20.0 | 20.0 | 13.443 | O | 1 |
| A11820 | 4.0 | 56.0 | 20.0 | 20.0 | 13.025 | O | 1 |
| A11821 | 3.0 | 57.0 | 20.0 | 20.0 | 12.608 | O | 1 |
| A11822 | 2.0 | 58.0 | 20.0 | 20.0 | 12.190 | O | 1 |
| A11823 | 1.0 | 59.0 | 20.0 | 20.0 | 11.772 | O | 1 |
| A11824 | 0.0 | 60.0 | 20.0 | 20.0 | 11.354 | O | 1 |
| A11825 | 19.0 | 31.0 | 30.0 | 20.0 | 19.232 | X | 1 |
| A11826 | 18.4 | 31.6 | 30.0 | 20.0 | 19.018 | X | 1 |
| A11827 | 18.3 | 31.7 | 30.0 | 20.0 | 18.982 | O | 1 |
| A11828 | 18.0 | 32.0 | 30.0 | 20.0 | 18.875 | O | 1 |
| A11829 | 15.0 | 35.0 | 30.0 | 20.0 | 17.804 | O | 1 |
| A11830 | 10.0 | 40.0 | 30.0 | 20.0 | 16.020 | O | 1 |
| A11831 | 9.0 | 41.0 | 30.0 | 20.0 | 15.663 | O | 1 |
| A11832 | 8.0 | 42.0 | 30.0 | 20.0 | 15.307 | O | 1 |
| A11833 | 7.0 | 43.0 | 30.0 | 20.0 | 14.911 | O | 1 |
| A11834 | 6.0 | 44.0 | 30.0 | 20.0 | 14.494 | O | 1 |

[Table 453]

| A11835 | 5.0 | 45.0 | 30.0 | 20.0 | 14.076 | O | 1 |
|---|---|---|---|---|---|---|---|
| A11836 | 4.0 | 46.0 | 30.0 | 20.0 | 13.658 | O | 1 |
| A11837 | 3.0 | 47.0 | 30.0 | 20.0 | 13.240 | O | 1 |
| A11838 | 2.0 | 48.0 | 30.0 | 20.0 | 12.822 | O | 1 |
| A11839 | 1.0 | 49.0 | 30.0 | 20.0 | 12.404 | O | 1 |
| A11840 | 0.0 | 50.0 | 30.0 | 20.0 | 11.986 | O | 1 |
| A11841 | 17.0 | 23.0 | 40.0 | 20.0 | 19.078 | X | 1 |
| A11842 | 16.8 | 23.2 | 40.0 | 20.0 | 19.006 | X | 1 |
| A11843 | 16.7 | 23.3 | 40.0 | 20.0 | 18.971 | O | 1 |
| A11844 | 16.0 | 24.0 | 40.0 | 20.0 | 18.721 | O | 1 |
| A11845 | 15.0 | 25.0 | 40.0 | 20.0 | 18.364 | O | 1 |
| A11846 | 10.0 | 30.0 | 40.0 | 20.0 | 16.580 | O | 1 |
| A11847 | 9.0 | 31.0 | 40.0 | 20.0 | 16.223 | O | 1 |
| A11848 | 8.0 | 32.0 | 40.0 | 20.0 | 15.866 | O | 1 |
| A11849 | 7.0 | 33.0 | 40.0 | 20.0 | 15.510 | O | 1 |
| A11850 | 6.0 | 34.0 | 40.0 | 20.0 | 15.126 | O | 1 |
| A11851 | 5.0 | 35.0 | 40.0 | 20.0 | 14.708 | O | 1 |
| A11852 | 4.0 | 36.0 | 40.0 | 20.0 | 14.290 | O | 1 |
| A11853 | 3.0 | 37.0 | 40.0 | 20.0 | 13.872 | O | 1 |
| A11854 | 2.0 | 38.0 | 40.0 | 20.0 | 13.454 | O | 1 |
| A11855 | 1.0 | 39.0 | 40.0 | 20.0 | 13.036 | O | 1 |
| A11856 | 0.0 | 40.0 | 40.0 | 20.0 | 12.618 | O | 1 |
| A11857 | 16.0 | 14.0 | 50.0 | 20.0 | 19.281 | X | 1 |
| A11858 | 15.3 | 14.7 | 50.0 | 20.0 | 19.031 | X | 1 |
| A11859 | 15.2 | 14.8 | 50.0 | 20.0 | 18.995 | O | 1 |
| A11860 | 15.0 | 15.0 | 50.0 | 20.0 | 18.924 | O | 1 |
| A11861 | 10.0 | 20.0 | 50.0 | 20.0 | 17.140 | O | 1 |
| A11862 | 9.0 | 21.0 | 50.0 | 20.0 | 16.783 | O | 1 |
| A11863 | 8.0 | 22.0 | 50.0 | 20.0 | 16.426 | O | 1 |
| A11864 | 7.0 | 23.0 | 50.0 | 20.0 | 16.070 | O | 1 |
| A11865 | 6.0 | 24.0 | 50.0 | 20.0 | 15.713 | O | 1 |
| A11866 | 5.0 | 25.0 | 50.0 | 20.0 | 15.340 | O | 1 |
| A11867 | 4.0 | 26.0 | 50.0 | 20.0 | 14.922 | O | 1 |
| A11868 | 3.0 | 27.0 | 50.0 | 20.0 | 14.504 | O | 1 |
| A11869 | 2.0 | 28.0 | 50.0 | 20.0 | 14.086 | O | 1 |
| A11870 | 1.0 | 29.0 | 50.0 | 20.0 | 13.668 | O | 1 |
| A11871 | 0.0 | 30.0 | 50.0 | 20.0 | 13.250 | O | 1 |
| A11872 | 14.0 | 6.0 | 60.0 | 20.0 | 19.127 | X | 1 |
| A11873 | 13.7 | 6.3 | 60.0 | 20.0 | 19.020 | X | 1 |
| A11874 | 13.6 | 6.4 | 60.0 | 20.0 | 18.984 | O | 1 |
| A11875 | 13.0 | 7.0 | 60.0 | 20.0 | 18.770 | O | 1 |
| A11876 | 10.0 | 10.0 | 60.0 | 20.0 | 17.700 | O | 1 |
| A11877 | 9.0 | 11.0 | 60.0 | 20.0 | 17.343 | O | 1 |
| A11878 | 8.0 | 12.0 | 60.0 | 20.0 | 16.986 | O | 1 |
| A11879 | 7.0 | 13.0 | 60.0 | 20.0 | 16.629 | O | 1 |
| A11880 | 6.0 | 14.0 | 60.0 | 20.0 | 16.273 | O | 1 |
| A11881 | 5.0 | 15.0 | 60.0 | 20.0 | 15.916 | O | 1 |
| A11882 | 4.0 | 16.0 | 60.0 | 20.0 | 15.554 | O | 1 |
| A11883 | 3.0 | 17.0 | 60.0 | 20.0 | 15.136 | O | 1 |
| A11884 | 2.0 | 18.0 | 60.0 | 20.0 | 14.719 | O | 1 |

[Table 454]

| | | | | | | | |
|---|---|---|---|---|---|---|---|
| A11885 | 1.0 | 19.0 | 60.0 | 20.0 | 14.301 | O | 1 |
| A11886 | 0.0 | 20.0 | 60.0 | 20.0 | 13.883 | O | 1 |
| A11887 | 22.0 | 38.0 | 10.0 | 30.0 | 19.242 | X | 1 |
| A11888 | 21.4 | 38.6 | 10.0 | 30.0 | 19.028 | X | 1 |
| A11889 | 21.3 | 38.7 | 10.0 | 30.0 | 18.993 | O | 1 |
| A11890 | 21.0 | 39.0 | 10.0 | 30.0 | 18.885 | O | 1 |
| A11891 | 20.0 | 40.0 | 10.0 | 30.0 | 18.529 | O | 1 |
| A11892 | 15.0 | 45.0 | 10.0 | 30.0 | 16.745 | O | 1 |
| A11893 | 10.0 | 50.0 | 10.0 | 30.0 | 14.961 | O | 1 |
| A11894 | 9.0 | 51.0 | 10.0 | 30.0 | 14.563 | O | 1 |
| A11895 | 8.0 | 52.0 | 10.0 | 30.0 | 14.145 | O | 1 |
| A11896 | 7.0 | 53.0 | 10.0 | 30.0 | 13.727 | O | 1 |
| A11897 | 6.0 | 54.0 | 10.0 | 30.0 | 13.309 | O | 1 |
| A11898 | 5.0 | 55.0 | 10.0 | 30.0 | 12.891 | O | 1 |
| A11899 | 4.0 | 56.0 | 10.0 | 30.0 | 12.474 | O | 1 |
| A11900 | 3.0 | 57.0 | 10.0 | 30.0 | 12.056 | O | 1 |
| A11901 | 2.0 | 58.0 | 10.0 | 30.0 | 11.638 | O | 1 |
| A11902 | 1.0 | 59.0 | 10.0 | 30.0 | 11.220 | O | 1 |
| A11903 | 0.0 | 60.0 | 10.0 | 30.0 | 10.802 | O | 1 |
| A11904 | 20.0 | 30.0 | 20.0 | 30.0 | 19.089 | X | 1 |
| A11905 | 19.8 | 30.2 | 20.0 | 30.0 | 19.017 | X | 1 |
| A11906 | 19.7 | 30.3 | 20.0 | 30.0 | 18.981 | O | 1 |
| A11907 | 19.0 | 31.0 | 20.0 | 30.0 | 18.732 | O | 1 |
| A11908 | 15.0 | 35.0 | 20.0 | 30.0 | 17.304 | O | 1 |
| A11909 | 10.0 | 40.0 | 20.0 | 30.0 | 15.520 | O | 1 |
| A11910 | 9.0 | 41.0 | 20.0 | 30.0 | 15.164 | O | 1 |
| A11911 | 8.0 | 42.0 | 20.0 | 30.0 | 14.777 | O | 1 |
| A11912 | 7.0 | 43.0 | 20.0 | 30.0 | 14.359 | O | 1 |
| A11913 | 6.0 | 44.0 | 20.0 | 30.0 | 13.942 | O | 1 |
| A11914 | 5.0 | 45.0 | 20.0 | 30.0 | 13.524 | O | 1 |
| A11915 | 4.0 | 46.0 | 20.0 | 30.0 | 13.106 | O | 1 |
| A11916 | 3.0 | 47.0 | 20.0 | 30.0 | 12.688 | O | 1 |
| A11917 | 2.0 | 48.0 | 20.0 | 30.0 | 12.270 | O | 1 |
| A11918 | 1.0 | 49.0 | 20.0 | 30.0 | 11.852 | O | 1 |
| A11919 | 0.0 | 50.0 | 20.0 | 30.0 | 11.434 | O | 1 |
| A11920 | 19.0 | 21.0 | 30.0 | 30.0 | 19.292 | X | 1 |
| A11921 | 18.2 | 21.8 | 30.0 | 30.0 | 19.006 | X | 1 |
| A11922 | 18.1 | 21.9 | 30.0 | 30.0 | 18.970 | O | 1 |
| A11923 | 18.0 | 22.0 | 30.0 | 30.0 | 18.935 | O | 1 |
| A11924 | 15.0 | 25.0 | 30.0 | 30.0 | 17.864 | O | 1 |
| A11925 | 10.0 | 30.0 | 30.0 | 30.0 | 16.080 | O | 1 |
| A11926 | 9.0 | 31.0 | 30.0 | 30.0 | 15.723 | O | 1 |
| A11927 | 8.0 | 32.0 | 30.0 | 30.0 | 15.367 | O | 1 |
| A11928 | 7.0 | 33.0 | 30.0 | 30.0 | 14.992 | O | 1 |
| A11929 | 6.0 | 34.0 | 30.0 | 30.0 | 14.574 | O | 1 |
| A11930 | 5.0 | 35.0 | 30.0 | 30.0 | 14.156 | O | 1 |
| A11931 | 4.0 | 36.0 | 30.0 | 30.0 | 13.738 | O | 1 |
| A11932 | 3.0 | 37.0 | 30.0 | 30.0 | 13.320 | O | 1 |
| A11933 | 2.0 | 38.0 | 30.0 | 30.0 | 12.902 | O | 1 |
| A11934 | 1.0 | 39.0 | 30.0 | 30.0 | 12.484 | O | 1 |

[Table 455]

| A11935 | 0.0 | 40.0 | 30.0 | 30.0 | 12.066 | O | 1 |
|---|---|---|---|---|---|---|---|
| A11936 | 17.0 | 13.0 | 40.0 | 30.0 | 19.138 | X | 1 |
| A11937 | 16.7 | 13.3 | 40.0 | 30.0 | 19.031 | X | 1 |
| A11938 | 16.6 | 13.4 | 40.0 | 30.0 | 18.995 | O | 1 |
| A11939 | 16.0 | 14.0 | 40.0 | 30.0 | 18.781 | O | 1 |
| A11940 | 15.0 | 15.0 | 40.0 | 30.0 | 18.424 | O | 1 |
| A11941 | 10.0 | 20.0 | 40.0 | 30.0 | 16.640 | O | 1 |
| A11942 | 9.0 | 21.0 | 40.0 | 30.0 | 16.283 | O | 1 |
| A11943 | 8.0 | 22.0 | 40.0 | 30.0 | 15.926 | O | 1 |
| A11944 | 7.0 | 23.0 | 40.0 | 30.0 | 15.570 | O | 1 |
| A11945 | 6.0 | 24.0 | 40.0 | 30.0 | 15.206 | O | 1 |
| A11946 | 5.0 | 25.0 | 40.0 | 30.0 | 14.788 | O | 1 |
| A11947 | 4.0 | 26.0 | 40.0 | 30.0 | 14.370 | O | 1 |
| A11948 | 3.0 | 27.0 | 40.0 | 30.0 | 13.952 | O | 1 |
| A11949 | 2.0 | 28.0 | 40.0 | 30.0 | 13.534 | O | 1 |
| A11950 | 1.0 | 29.0 | 40.0 | 30.0 | 13.116 | O | 1 |
| A11951 | 0.0 | 30.0 | 40.0 | 30.0 | 12.699 | O | 1 |
| A11952 | 16.0 | 4.0 | 50.0 | 30.0 | 19.341 | X | 1 |
| A11953 | 15.1 | 4.9 | 50.0 | 30.0 | 19.020 | X | 1 |
| A11954 | 15.0 | 5.0 | 50.0 | 30.0 | 18.984 | O | 1 |
| A11955 | 10.0 | 10.0 | 50.0 | 30.0 | 17.200 | O | 1 |
| A11956 | 9.0 | 11.0 | 50.0 | 30.0 | 16.843 | O | 1 |
| A11957 | 8.0 | 12.0 | 50.0 | 30.0 | 16.486 | O | 1 |
| A11958 | 7.0 | 13.0 | 50.0 | 30.0 | 16.129 | O | 1 |
| A11959 | 6.0 | 14.0 | 50.0 | 30.0 | 15.773 | O | 1 |
| A11960 | 5.0 | 15.0 | 50.0 | 30.0 | 15.416 | O | 1 |
| A11961 | 4.0 | 16.0 | 50.0 | 30.0 | 15.002 | O | 1 |
| A11962 | 3.0 | 17.0 | 50.0 | 30.0 | 14.585 | O | 1 |
| A11963 | 2.0 | 18.0 | 50.0 | 30.0 | 14.167 | O | 1 |
| A11964 | 1.0 | 19.0 | 50.0 | 30.0 | 13.749 | O | 1 |
| A11965 | 0.0 | 20.0 | 50.0 | 30.0 | 13.331 | O | 1 |
| A11966 | 22.0 | 28.0 | 10.0 | 40.0 | 19.302 | X | 1 |
| A11967 | 21.2 | 28.8 | 10.0 | 40.0 | 19.017 | X | 1 |
| A11968 | 21.1 | 28.9 | 10.0 | 40.0 | 18.981 | O | 1 |
| A11969 | 21.0 | 29.0 | 10.0 | 40.0 | 18.945 | O | 1 |
| A11970 | 20.0 | 30.0 | 10.0 | 40.0 | 18.589 | O | 1 |
| A11971 | 15.0 | 35.0 | 10.0 | 40.0 | 16.805 | O | 1 |
| A11972 | 10.0 | 40.0 | 10.0 | 40.0 | 15.020 | O | 1 |
| A11973 | 9.0 | 41.0 | 10.0 | 40.0 | 14.643 | O | 1 |
| A11974 | 8.0 | 42.0 | 10.0 | 40.0 | 14.225 | O | 1 |
| A11975 | 7.0 | 43.0 | 10.0 | 40.0 | 13.808 | O | 1 |
| A11976 | 6.0 | 44.0 | 10.0 | 40.0 | 13.390 | O | 1 |
| A11977 | 5.0 | 45.0 | 10.0 | 40.0 | 12.972 | O | 1 |
| A11978 | 4.0 | 46.0 | 10.0 | 40.0 | 12.554 | O | 1 |
| A11979 | 3.0 | 47.0 | 10.0 | 40.0 | 12.136 | O | 1 |
| A11980 | 2.0 | 48.0 | 10.0 | 40.0 | 11.718 | O | 1 |
| A11981 | 1.0 | 49.0 | 10.0 | 40.0 | 11.300 | O | 1 |
| A11982 | 0.0 | 50.0 | 10.0 | 40.0 | 10.882 | O | 1 |
| A11983 | 20.0 | 20.0 | 20.0 | 40.0 | 19.148 | X | 1 |
| A11984 | 19.6 | 20.4 | 20.0 | 40.0 | 19.006 | X | 1 |

[Table 456]

| A11985 | 19.5 | 20.5 | 20.0 | 40.0 | 18.970 | O | 1 |
|--------|------|------|------|------|--------|---|---|
| A11986 | 19.0 | 21.0 | 20.0 | 40.0 | 18.792 | O | 1 |
| A11987 | 15.0 | 25.0 | 20.0 | 40.0 | 17.364 | O | 1 |
| A11988 | 10.0 | 30.0 | 20.0 | 40.0 | 15.580 | O | 1 |
| A11989 | 9.0 | 31.0 | 20.0 | 40.0 | 15.224 | O | 1 |
| A11990 | 8.0 | 32.0 | 20.0 | 40.0 | 14.858 | O | 1 |
| A11991 | 7.0 | 33.0 | 20.0 | 40.0 | 14.440 | O | 1 |
| A11992 | 6.0 | 34.0 | 20.0 | 40.0 | 14.022 | O | 1 |
| A11993 | 5.0 | 35.0 | 20.0 | 40.0 | 13.604 | O | 1 |
| A11994 | 4.0 | 36.0 | 20.0 | 40.0 | 13.186 | O | 1 |
| A11995 | 3.0 | 37.0 | 20.0 | 40.0 | 12.768 | O | 1 |
| A11996 | 2.0 | 38.0 | 20.0 | 40.0 | 12.350 | O | 1 |
| A11997 | 1.0 | 39.0 | 20.0 | 40.0 | 11.932 | O | 1 |
| A11998 | 0.0 | 40.0 | 20.0 | 40.0 | 11.514 | O | 1 |
| A11999 | 19.0 | 11.0 | 30.0 | 40.0 | 19.351 | X | 1 |
| A12000 | 18.1 | 11.9 | 30.0 | 40.0 | 19.030 | X | 1 |
| A12001 | 18.0 | 12.0 | 30.0 | 40.0 | 18.995 | O | 1 |
| A12002 | 15.0 | 15.0 | 30.0 | 40.0 | 17.924 | O | 1 |
| A12003 | 10.0 | 20.0 | 30.0 | 40.0 | 16.140 | O | 1 |
| A12004 | 9.0 | 21.0 | 30.0 | 40.0 | 15.783 | O | 1 |
| A12005 | 8.0 | 22.0 | 30.0 | 40.0 | 15.427 | O | 1 |
| A12006 | 7.0 | 23.0 | 30.0 | 40.0 | 15.070 | O | 1 |
| A12007 | 6.0 | 24.0 | 30.0 | 40.0 | 14.654 | O | 1 |
| A12008 | 5.0 | 25.0 | 30.0 | 40.0 | 14.236 | O | 1 |
| A12009 | 4.0 | 26.0 | 30.0 | 40.0 | 13.818 | O | 1 |
| A12010 | 3.0 | 27.0 | 30.0 | 40.0 | 13.400 | O | 1 |
| A12011 | 2.0 | 28.0 | 30.0 | 40.0 | 12.982 | O | 1 |
| A12012 | 1.0 | 29.0 | 30.0 | 40.0 | 12.564 | O | 1 |
| A12013 | 0.0 | 30.0 | 30.0 | 40.0 | 12.147 | O | 1 |
| A12014 | 17.0 | 3.0 | 40.0 | 40.0 | 19.198 | X | 1 |
| A12015 | 16.5 | 3.5 | 40.0 | 40.0 | 19.019 | X | 1 |
| A12016 | 16.4 | 3.6 | 40.0 | 40.0 | 18.984 | O | 1 |
| A12017 | 16.0 | 4.0 | 40.0 | 40.0 | 18.841 | O | 1 |
| A12018 | 15.0 | 5.0 | 40.0 | 40.0 | 18.484 | O | 1 |
| A12019 | 10.0 | 10.0 | 40.0 | 40.0 | 16.700 | O | 1 |
| A12020 | 9.0 | 11.0 | 40.0 | 40.0 | 16.343 | O | 1 |
| A12021 | 8.0 | 12.0 | 40.0 | 40.0 | 15.986 | O | 1 |
| A12022 | 7.0 | 13.0 | 40.0 | 40.0 | 15.630 | O | 1 |
| A12023 | 6.0 | 14.0 | 40.0 | 40.0 | 15.273 | O | 1 |
| A12024 | 5.0 | 15.0 | 40.0 | 40.0 | 14.868 | O | 1 |
| A12025 | 4.0 | 16.0 | 40.0 | 40.0 | 14.450 | O | 1 |
| A12026 | 3.0 | 17.0 | 40.0 | 40.0 | 14.033 | O | 1 |
| A12027 | 2.0 | 18.0 | 40.0 | 40.0 | 13.615 | O | 1 |
| A12028 | 1.0 | 19.0 | 40.0 | 40.0 | 13.197 | O | 1 |
| A12029 | 0.0 | 20.0 | 40.0 | 40.0 | 12.779 | O | 1 |
| A12030 | 21.0 | 19.0 | 10.0 | 50.0 | 19.005 | X | 1 |
| A12031 | 20.9 | 19.1 | 10.0 | 50.0 | 18.970 | O | 1 |
| A12032 | 20.0 | 20.0 | 10.0 | 50.0 | 18.649 | O | 1 |
| A12033 | 15.0 | 25.0 | 10.0 | 50.0 | 16.865 | O | 1 |
| A12034 | 10.0 | 30.0 | 10.0 | 50.0 | 15.080 | O | 1 |

[Table 457]

| A12035 | 9.0 | 31.0 | 10.0 | 50.0 | 14.724 | O | 1 |
|---|---|---|---|---|---|---|---|
| A12036 | 8.0 | 32.0 | 10.0 | 50.0 | 14.306 | O | 1 |
| A12037 | 7.0 | 33.0 | 10.0 | 50.0 | 13.888 | O | 1 |
| A12038 | 6.0 | 34.0 | 10.0 | 50.0 | 13.470 | O | 1 |
| A12039 | 5.0 | 35.0 | 10.0 | 50.0 | 13.052 | O | 1 |
| A12040 | 4.0 | 36.0 | 10.0 | 50.0 | 12.634 | O | 1 |
| A12041 | 3.0 | 37.0 | 10.0 | 50.0 | 12.216 | O | 1 |
| A12042 | 2.0 | 38.0 | 10.0 | 50.0 | 11.798 | O | 1 |
| A12043 | 1.0 | 39.0 | 10.0 | 50.0 | 11.380 | O | 1 |
| A12044 | 0.0 | 40.0 | 10.0 | 50.0 | 10.962 | O | 1 |
| A12045 | 20.0 | 10.0 | 20.0 | 50.0 | 19.208 | X | 1 |
| A12046 | 19.5 | 10.5 | 20.0 | 50.0 | 19.030 | X | 1 |
| A12047 | 19.4 | 10.6 | 20.0 | 50.0 | 18.994 | O | 1 |
| A12048 | 19.0 | 11.0 | 20.0 | 50.0 | 18.852 | O | 1 |
| A12049 | 15.0 | 15.0 | 20.0 | 50.0 | 17.424 | O | 1 |
| A12050 | 10.0 | 20.0 | 20.0 | 50.0 | 15.640 | O | 1 |
| A12051 | 9.0 | 21.0 | 20.0 | 50.0 | 15.283 | O | 1 |
| A12052 | 8.0 | 22.0 | 20.0 | 50.0 | 14.927 | O | 1 |
| A12053 | 7.0 | 23.0 | 20.0 | 50.0 | 14.520 | O | 1 |
| A12054 | 6.0 | 24.0 | 20.0 | 50.0 | 14.102 | O | 1 |
| A12055 | 5.0 | 25.0 | 20.0 | 50.0 | 13.684 | O | 1 |
| A12056 | 4.0 | 26.0 | 20.0 | 50.0 | 13.266 | O | 1 |
| A12057 | 3.0 | 27.0 | 20.0 | 50.0 | 12.848 | O | 1 |
| A12058 | 2.0 | 28.0 | 20.0 | 50.0 | 12.430 | O | 1 |
| A12059 | 1.0 | 29.0 | 20.0 | 50.0 | 12.013 | O | 1 |
| A12060 | 0.0 | 30.0 | 20.0 | 50.0 | 11.595 | O | 1 |
| A12061 | 18.0 | 2.0 | 30.0 | 50.0 | 19.055 | X | 1 |
| A12062 | 17.9 | 2.1 | 30.0 | 50.0 | 19.019 | X | 1 |
| A12063 | 17.8 | 2.2 | 30.0 | 50.0 | 18.983 | O | 1 |
| A12064 | 17.0 | 3.0 | 30.0 | 50.0 | 18.698 | O | 1 |
| A12065 | 15.0 | 5.0 | 30.0 | 50.0 | 17.984 | O | 1 |
| A12066 | 10.0 | 10.0 | 30.0 | 50.0 | 16.200 | O | 1 |
| A12067 | 9.0 | 11.0 | 30.0 | 50.0 | 15.843 | O | 1 |
| A12068 | 8.0 | 12.0 | 30.0 | 50.0 | 15.486 | O | 1 |
| A12069 | 7.0 | 13.0 | 30.0 | 50.0 | 15.130 | O | 1 |
| A12070 | 6.0 | 14.0 | 30.0 | 50.0 | 14.734 | O | 1 |
| A12071 | 5.0 | 15.0 | 30.0 | 50.0 | 14.316 | O | 1 |
| A12072 | 4.0 | 16.0 | 30.0 | 50.0 | 13.899 | O | 1 |
| A12073 | 3.0 | 17.0 | 30.0 | 50.0 | 13.481 | O | 1 |
| A12074 | 2.0 | 18.0 | 30.0 | 50.0 | 13.063 | O | 1 |
| A12075 | 1.0 | 19.0 | 30.0 | 50.0 | 12.645 | O | 1 |
| A12076 | 0.0 | 20.0 | 30.0 | 50.0 | 12.227 | O | 1 |
| A12077 | 21.0 | 9.0 | 10.0 | 60.0 | 19.065 | X | 1 |
| A12078 | 20.9 | 9.1 | 10.0 | 60.0 | 19.030 | X | 1 |
| A12079 | 20.8 | 9.2 | 10.0 | 60.0 | 18.994 | O | 1 |
| A12080 | 20.0 | 10.0 | 10.0 | 60.0 | 18.709 | O | 1 |
| A12081 | 15.0 | 15.0 | 10.0 | 60.0 | 16.924 | O | 1 |
| A12082 | 10.0 | 20.0 | 10.0 | 60.0 | 15.140 | O | 1 |
| A12083 | 9.0 | 21.0 | 10.0 | 60.0 | 14.784 | O | 1 |
| A12084 | 8.0 | 22.0 | 10.0 | 60.0 | 14.386 | O | 1 |

[Table 458]

| A12085 | 7.0 | 23.0 | 10.0 | 60.0 | 13.968 | O | 1 |
|--------|-----|------|------|------|--------|---|---|
| A12086 | 6.0 | 24.0 | 10.0 | 60.0 | 13.550 | O | 1 |
| A12087 | 5.0 | 25.0 | 10.0 | 60.0 | 13.132 | O | 1 |
| A12088 | 4.0 | 26.0 | 10.0 | 60.0 | 12.714 | O | 1 |
| A12089 | 3.0 | 27.0 | 10.0 | 60.0 | 12.296 | O | 1 |
| A12090 | 2.0 | 28.0 | 10.0 | 60.0 | 11.878 | O | 1 |
| A12091 | 1.0 | 29.0 | 10.0 | 60.0 | 11.461 | O | 1 |
| A12092 | 0.0 | 30.0 | 10.0 | 60.0 | 11.043 | O | 1 |
| A12093 | 20.0 | 0.0 | 20.0 | 60.0 | 19.268 | X | 1 |
| A12094 | 19.3 | 0.7 | 20.0 | 60.0 | 19.019 | X | 1 |
| A12095 | 19.2 | 0.8 | 20.0 | 60.0 | 18.983 | O | 1 |
| A12096 | 19.0 | 1.0 | 20.0 | 60.0 | 18.912 | O | 1 |
| A12097 | 15.0 | 5.0 | 20.0 | 60.0 | 17.484 | O | 1 |
| A12098 | 10.0 | 10.0 | 20.0 | 60.0 | 15.700 | O | 1 |
| A12099 | 9.0 | 11.0 | 20.0 | 60.0 | 15.343 | O | 1 |
| A12100 | 8.0 | 12.0 | 20.0 | 60.0 | 14.987 | O | 1 |
| A12101 | 7.0 | 13.0 | 20.0 | 60.0 | 14.600 | O | 1 |
| A12102 | 6.0 | 14.0 | 20.0 | 60.0 | 14.182 | O | 1 |
| A12103 | 5.0 | 15.0 | 20.0 | 60.0 | 13.764 | O | 1 |
| A12104 | 4.0 | 16.0 | 20.0 | 60.0 | 13.347 | O | 1 |
| A12105 | 3.0 | 17.0 | 20.0 | 60.0 | 12.929 | O | 1 |
| A12106 | 2.0 | 18.0 | 20.0 | 60.0 | 12.511 | O | 1 |
| A12107 | 1.0 | 19.0 | 20.0 | 60.0 | 12.093 | O | 1 |
| A12108 | 0.0 | 20.0 | 20.0 | 60.0 | 11.675 | O | 1 |

Tables 459 to 467 show the composition, combustion heat amount, and GWP of the working medium of a four-component system of propane, HFO-1123, HFO-1132(E), and HFO-1234ze(E).

[Table 459]

| Case | propane | HFO-1123 | HFO-1132(E) | HFO-1234ze(E) | Heat of Combustion | Evaluation | GWP |
|---|---|---|---|---|---|---|---|
| A12109 | 22.0 | 58.0 | 10.0 | 10.0 | 19.063 | X | 1 |
| A12110 | 21.9 | 58.1 | 10.0 | 10.0 | 19.027 | X | 1 |
| A12111 | 21.8 | 58.2 | 10.0 | 10.0 | 18.992 | O | 1 |
| A12112 | 21.0 | 59.0 | 10.0 | 10.0 | 18.706 | O | 1 |
| A12113 | 20.0 | 60.0 | 10.0 | 10.0 | 18.349 | O | 1 |
| A12114 | 15.0 | 65.0 | 10.0 | 10.0 | 16.565 | O | 1 |
| A12115 | 10.0 | 70.0 | 10.0 | 10.0 | 14.761 | O | 1 |
| A12116 | 9.0 | 71.0 | 10.0 | 10.0 | 14.343 | O | 1 |
| A12117 | 8.0 | 72.0 | 10.0 | 10.0 | 13.925 | O | 1 |
| A12118 | 7.0 | 73.0 | 10.0 | 10.0 | 13.507 | O | 1 |
| A12119 | 6.0 | 74.0 | 10.0 | 10.0 | 13.089 | O | 1 |
| A12120 | 5.0 | 75.0 | 10.0 | 10.0 | 12.672 | O | 1 |
| A12121 | 4.0 | 76.0 | 10.0 | 10.0 | 12.254 | O | 1 |
| A12122 | 3.0 | 77.0 | 10.0 | 10.0 | 11.836 | O | 1 |
| A12123 | 2.0 | 78.0 | 10.0 | 10.0 | 11.418 | O | 1 |
| A12124 | 1.0 | 79.0 | 10.0 | 10.0 | 11.000 | O | 1 |
| A12125 | 0.0 | 80.0 | 10.0 | 10.0 | 10.582 | O | 1 |
| A12126 | 21.0 | 49.0 | 20.0 | 10.0 | 19.266 | X | 1 |
| A12127 | 20.3 | 49.7 | 20.0 | 10.0 | 19.016 | X | 1 |
| A12128 | 20.2 | 49.8 | 20.0 | 10.0 | 18.981 | O | 1 |
| A12129 | 20.0 | 50.0 | 20.0 | 10.0 | 18.909 | O | 1 |
| A12130 | 15.0 | 55.0 | 20.0 | 10.0 | 17.125 | O | 1 |
| A12131 | 10.0 | 60.0 | 20.0 | 10.0 | 15.341 | O | 1 |
| A12132 | 9.0 | 61.0 | 20.0 | 10.0 | 14.975 | O | 1 |
| A12133 | 8.0 | 62.0 | 20.0 | 10.0 | 14.558 | O | 1 |
| A12134 | 7.0 | 63.0 | 20.0 | 10.0 | 14.140 | O | 1 |
| A12135 | 6.0 | 64.0 | 20.0 | 10.0 | 13.722 | O | 1 |
| A12136 | 5.0 | 65.0 | 20.0 | 10.0 | 13.304 | O | 1 |
| A12137 | 4.0 | 66.0 | 20.0 | 10.0 | 12.886 | O | 1 |
| A12138 | 3.0 | 67.0 | 20.0 | 10.0 | 12.468 | O | 1 |
| A12139 | 2.0 | 68.0 | 20.0 | 10.0 | 12.050 | O | 1 |
| A12140 | 1.0 | 69.0 | 20.0 | 10.0 | 11.632 | O | 1 |
| A12141 | 0.0 | 70.0 | 20.0 | 10.0 | 11.214 | O | 1 |
| A12142 | 19.0 | 41.0 | 30.0 | 10.0 | 19.112 | X | 1 |
| A12143 | 18.7 | 41.3 | 30.0 | 10.0 | 19.005 | X | 1 |
| A12144 | 18.6 | 41.4 | 30.0 | 10.0 | 18.970 | O | 1 |
| A12145 | 18.0 | 42.0 | 30.0 | 10.0 | 18.755 | O | 1 |
| A12146 | 15.0 | 45.0 | 30.0 | 10.0 | 17.685 | O | 1 |
| A12147 | 10.0 | 50.0 | 30.0 | 10.0 | 15.901 | O | 1 |
| A12148 | 9.0 | 51.0 | 30.0 | 10.0 | 15.544 | O | 1 |
| A12149 | 8.0 | 52.0 | 30.0 | 10.0 | 15.187 | O | 1 |
| A12150 | 7.0 | 53.0 | 30.0 | 10.0 | 14.772 | O | 1 |
| A12151 | 6.0 | 54.0 | 30.0 | 10.0 | 14.354 | O | 1 |
| A12152 | 5.0 | 55.0 | 30.0 | 10.0 | 13.936 | O | 1 |
| A12153 | 4.0 | 56.0 | 30.0 | 10.0 | 13.518 | O | 1 |
| A12154 | 3.0 | 57.0 | 30.0 | 10.0 | 13.100 | O | 1 |
| A12155 | 2.0 | 58.0 | 30.0 | 10.0 | 12.682 | O | 1 |
| A12156 | 1.0 | 59.0 | 30.0 | 10.0 | 12.264 | O | 1 |
| A12157 | 0.0 | 60.0 | 30.0 | 10.0 | 11.846 | O | 1 |
| A12158 | 18.0 | 32.0 | 40.0 | 10.0 | 19.315 | X | 1 |

[Table 460]

| | | | | | | | |
|---|---|---|---|---|---|---|---|
| A12159 | 17.2 | 32.8 | 40.0 | 10.0 | 19.030 | X | 1 |
| A12160 | 17.1 | 32.9 | 40.0 | 10.0 | 18.994 | O | 1 |
| A12161 | 17.0 | 33.0 | 40.0 | 10.0 | 18.958 | O | 1 |
| A12162 | 15.0 | 35.0 | 40.0 | 10.0 | 18.245 | O | 1 |
| A12163 | 10.0 | 40.0 | 40.0 | 10.0 | 16.461 | O | 1 |
| A12164 | 9.0 | 41.0 | 40.0 | 10.0 | 16.104 | O | 1 |
| A12165 | 8.0 | 42.0 | 40.0 | 10.0 | 15.747 | O | 1 |
| A12166 | 7.0 | 43.0 | 40.0 | 10.0 | 15.390 | O | 1 |
| A12167 | 6.0 | 44.0 | 40.0 | 10.0 | 14.986 | O | 1 |
| A12168 | 5.0 | 45.0 | 40.0 | 10.0 | 14.568 | O | 1 |
| A12169 | 4.0 | 46.0 | 40.0 | 10.0 | 14.150 | O | 1 |
| A12170 | 3.0 | 47.0 | 40.0 | 10.0 | 13.732 | O | 1 |
| A12171 | 2.0 | 48.0 | 40.0 | 10.0 | 13.314 | O | 1 |
| A12172 | 1.0 | 49.0 | 40.0 | 10.0 | 12.897 | O | 1 |
| A12173 | 0.0 | 50.0 | 40.0 | 10.0 | 12.479 | O | 1 |
| A12174 | 16.0 | 24.0 | 50.0 | 10.0 | 19.162 | X | 1 |
| A12175 | 15.6 | 24.4 | 50.0 | 10.0 | 19.019 | X | 1 |
| A12176 | 15.5 | 24.5 | 50.0 | 10.0 | 18.983 | O | 1 |
| A12177 | 15.0 | 25.0 | 50.0 | 10.0 | 18.805 | O | 1 |
| A12178 | 10.0 | 30.0 | 50.0 | 10.0 | 17.021 | O | 1 |
| A12179 | 9.0 | 31.0 | 50.0 | 10.0 | 16.664 | O | 1 |
| A12180 | 8.0 | 32.0 | 50.0 | 10.0 | 16.307 | O | 1 |
| A12181 | 7.0 | 33.0 | 50.0 | 10.0 | 15.950 | O | 1 |
| A12182 | 6.0 | 34.0 | 50.0 | 10.0 | 15.593 | O | 1 |
| A12183 | 5.0 | 35.0 | 50.0 | 10.0 | 15.200 | O | 1 |
| A12184 | 4.0 | 36.0 | 50.0 | 10.0 | 14.783 | O | 1 |
| A12185 | 3.0 | 37.0 | 50.0 | 10.0 | 14.365 | O | 1 |
| A12186 | 2.0 | 38.0 | 50.0 | 10.0 | 13.947 | O | 1 |
| A12187 | 1.0 | 39.0 | 50.0 | 10.0 | 13.529 | O | 1 |
| A12188 | 0.0 | 40.0 | 50.0 | 10.0 | 13.111 | O | 1 |
| A12189 | 14.0 | 16.0 | 60.0 | 10.0 | 19.008 | X | 1 |
| A12190 | 13.9 | 16.1 | 60.0 | 10.0 | 18.972 | O | 1 |
| A12191 | 13.0 | 17.0 | 60.0 | 10.0 | 18.651 | O | 1 |
| A12192 | 10.0 | 20.0 | 60.0 | 10.0 | 17.580 | O | 1 |
| A12193 | 9.0 | 21.0 | 60.0 | 10.0 | 17.224 | O | 1 |
| A12194 | 8.0 | 22.0 | 60.0 | 10.0 | 16.867 | O | 1 |
| A12195 | 7.0 | 23.0 | 60.0 | 10.0 | 16.510 | O | 1 |
| A12196 | 6.0 | 24.0 | 60.0 | 10.0 | 16.153 | O | 1 |
| A12197 | 5.0 | 25.0 | 60.0 | 10.0 | 15.796 | O | 1 |
| A12198 | 4.0 | 26.0 | 60.0 | 10.0 | 15.415 | O | 1 |
| A12199 | 3.0 | 27.0 | 60.0 | 10.0 | 14.997 | O | 1 |
| A12200 | 2.0 | 28.0 | 60.0 | 10.0 | 14.579 | O | 1 |
| A12201 | 1.0 | 29.0 | 60.0 | 10.0 | 14.161 | O | 1 |
| A12202 | 0.0 | 30.0 | 60.0 | 10.0 | 13.743 | O | 1 |
| A12203 | 13.0 | 7.0 | 70.0 | 10.0 | 19.211 | X | 1 |
| A12204 | 12.5 | 7.5 | 70.0 | 10.0 | 19.032 | X | 1 |
| A12205 | 12.4 | 7.6 | 70.0 | 10.0 | 18.997 | O | 1 |
| A12206 | 12.0 | 8.0 | 70.0 | 10.0 | 18.854 | O | 1 |
| A12207 | 10.0 | 10.0 | 70.0 | 10.0 | 18.140 | O | 1 |
| A12208 | 9.0 | 11.0 | 70.0 | 10.0 | 17.783 | O | 1 |

[Table 461]

EP 4 442 787 A1

| A12209 | 8.0 | 12.0 | 70.0 | 10.0 | 17.427 | O | 1 |
|---|---|---|---|---|---|---|---|
| A12210 | 7.0 | 13.0 | 70.0 | 10.0 | 17.070 | O | 1 |
| A12211 | 6.0 | 14.0 | 70.0 | 10.0 | 16.713 | O | 1 |
| A12212 | 5.0 | 15.0 | 70.0 | 10.0 | 16.356 | O | 1 |
| A12213 | 4.0 | 16.0 | 70.0 | 10.0 | 15.999 | O | 1 |
| A12214 | 3.0 | 17.0 | 70.0 | 10.0 | 15.629 | O | 1 |
| A12215 | 2.0 | 18.0 | 70.0 | 10.0 | 15.211 | O | 1 |
| A12216 | 1.0 | 19.0 | 70.0 | 10.0 | 14.793 | O | 1 |
| A12217 | 0.0 | 20.0 | 70.0 | 10.0 | 14.375 | O | 1 |
| A12218 | 22.0 | 48.0 | 10.0 | 20.0 | 19.064 | X | 1 |
| A12219 | 21.9 | 48.1 | 10.0 | 20.0 | 19.028 | X | 1 |
| A12220 | 21.8 | 48.2 | 10.0 | 20.0 | 18.992 | O | 1 |
| A12221 | 21.0 | 49.0 | 10.0 | 20.0 | 18.707 | O | 1 |
| A12222 | 20.0 | 50.0 | 10.0 | 20.0 | 18.350 | O | 1 |
| A12223 | 15.0 | 55.0 | 10.0 | 20.0 | 16.566 | O | 1 |
| A12224 | 10.0 | 60.0 | 10.0 | 20.0 | 14.782 | O | 1 |
| A12225 | 9.0 | 61.0 | 10.0 | 20.0 | 14.364 | O | 1 |
| A12226 | 8.0 | 62.0 | 10.0 | 20.0 | 13.946 | O | 1 |
| A12227 | 7.0 | 63.0 | 10.0 | 20.0 | 13.528 | O | 1 |
| A12228 | 6.0 | 64.0 | 10.0 | 20.0 | 13.110 | O | 1 |
| A12229 | 5.0 | 65.0 | 10.0 | 20.0 | 12.692 | O | 1 |
| A12230 | 4.0 | 66.0 | 10.0 | 20.0 | 12.275 | O | 1 |
| A12231 | 3.0 | 67.0 | 10.0 | 20.0 | 11.857 | O | 1 |
| A12232 | 2.0 | 68.0 | 10.0 | 20.0 | 11.439 | O | 1 |
| A12233 | 1.0 | 69.0 | 10.0 | 20.0 | 11.021 | O | 1 |
| A12234 | 0.0 | 70.0 | 10.0 | 20.0 | 10.603 | O | 1 |
| A12235 | 21.0 | 39.0 | 20.0 | 20.0 | 19.267 | X | 1 |
| A12236 | 20.3 | 39.7 | 20.0 | 20.0 | 19.017 | X | 1 |
| A12237 | 20.2 | 39.8 | 20.0 | 20.0 | 18.981 | O | 1 |
| A12238 | 20.0 | 40.0 | 20.0 | 20.0 | 18.910 | O | 1 |
| A12239 | 15.0 | 45.0 | 20.0 | 20.0 | 17.126 | O | 1 |
| A12240 | 10.0 | 50.0 | 20.0 | 20.0 | 15.342 | O | 1 |
| A12241 | 9.0 | 51.0 | 20.0 | 20.0 | 14.985 | O | 1 |
| A12242 | 8.0 | 52.0 | 20.0 | 20.0 | 14.578 | O | 1 |
| A12243 | 7.0 | 53.0 | 20.0 | 20.0 | 14.160 | O | 1 |
| A12244 | 6.0 | 54.0 | 20.0 | 20.0 | 13.743 | O | 1 |
| A12245 | 5.0 | 55.0 | 20.0 | 20.0 | 13.325 | O | 1 |
| A12246 | 4.0 | 56.0 | 20.0 | 20.0 | 12.907 | O | 1 |
| A12247 | 3.0 | 57.0 | 20.0 | 20.0 | 12.489 | O | 1 |
| A12248 | 2.0 | 58.0 | 20.0 | 20.0 | 12.071 | O | 1 |
| A12249 | 1.0 | 59.0 | 20.0 | 20.0 | 11.653 | O | 1 |
| A12250 | 0.0 | 60.0 | 20.0 | 20.0 | 11.235 | O | 1 |
| A12251 | 19.0 | 31.0 | 30.0 | 20.0 | 19.113 | X | 1 |
| A12252 | 18.7 | 31.3 | 30.0 | 20.0 | 19.006 | X | 1 |
| A12253 | 18.6 | 31.4 | 30.0 | 20.0 | 18.970 | O | 1 |
| A12254 | 18.0 | 32.0 | 30.0 | 20.0 | 18.756 | O | 1 |
| A12255 | 15.0 | 35.0 | 30.0 | 20.0 | 17.686 | O | 1 |
| A12256 | 10.0 | 40.0 | 30.0 | 20.0 | 15.902 | O | 1 |
| A12257 | 9.0 | 41.0 | 30.0 | 20.0 | 15.545 | O | 1 |
| A12258 | 8.0 | 42.0 | 30.0 | 20.0 | 15.188 | O | 1 |

[Table 462]

481

| | | | | | | | |
|---|---|---|---|---|---|---|---|
| A12259 | 7.0 | 43.0 | 30.0 | 20.0 | 14.793 | O | 1 |
| A12260 | 6.0 | 44.0 | 30.0 | 20.0 | 14.375 | O | 1 |
| A12261 | 5.0 | 45.0 | 30.0 | 20.0 | 13.957 | O | 1 |
| A12262 | 4.0 | 46.0 | 30.0 | 20.0 | 13.539 | O | 1 |
| A12263 | 3.0 | 47.0 | 30.0 | 20.0 | 13.121 | O | 1 |
| A12264 | 2.0 | 48.0 | 30.0 | 20.0 | 12.703 | O | 1 |
| A12265 | 1.0 | 49.0 | 30.0 | 20.0 | 12.285 | O | 1 |
| A12266 | 0.0 | 50.0 | 30.0 | 20.0 | 11.867 | O | 1 |
| A12267 | 18.0 | 22.0 | 40.0 | 20.0 | 19.316 | X | 1 |
| A12268 | 17.2 | 22.8 | 40.0 | 20.0 | 19.030 | X | 1 |
| A12269 | 17.1 | 22.9 | 40.0 | 20.0 | 18.995 | O | 1 |
| A12270 | 17.0 | 23.0 | 40.0 | 20.0 | 18.959 | O | 1 |
| A12271 | 15.0 | 25.0 | 40.0 | 20.0 | 18.245 | O | 1 |
| A12272 | 10.0 | 30.0 | 40.0 | 20.0 | 16.461 | O | 1 |
| A12273 | 9.0 | 31.0 | 40.0 | 20.0 | 16.105 | O | 1 |
| A12274 | 8.0 | 32.0 | 40.0 | 20.0 | 15.748 | O | 1 |
| A12275 | 7.0 | 33.0 | 40.0 | 20.0 | 15.391 | O | 1 |
| A12276 | 6.0 | 34.0 | 40.0 | 20.0 | 15.007 | O | 1 |
| A12277 | 5.0 | 35.0 | 40.0 | 20.0 | 14.589 | O | 1 |
| A12278 | 4.0 | 36.0 | 40.0 | 20.0 | 14.171 | O | 1 |
| A12279 | 3.0 | 37.0 | 40.0 | 20.0 | 13.753 | O | 1 |
| A12280 | 2.0 | 38.0 | 40.0 | 20.0 | 13.335 | O | 1 |
| A12281 | 1.0 | 39.0 | 40.0 | 20.0 | 12.917 | O | 1 |
| A12282 | 0.0 | 40.0 | 40.0 | 20.0 | 12.500 | O | 1 |
| A12283 | 16.0 | 14.0 | 50.0 | 20.0 | 19.162 | X | 1 |
| A12284 | 15.6 | 14.4 | 50.0 | 20.0 | 19.019 | X | 1 |
| A12285 | 15.5 | 14.5 | 50.0 | 20.0 | 18.984 | O | 1 |
| A12286 | 15.0 | 15.0 | 50.0 | 20.0 | 18.805 | O | 1 |
| A12287 | 10.0 | 20.0 | 50.0 | 20.0 | 17.021 | O | 1 |
| A12288 | 9.0 | 21.0 | 50.0 | 20.0 | 16.664 | O | 1 |
| A12289 | 8.0 | 22.0 | 50.0 | 20.0 | 16.308 | O | 1 |
| A12290 | 7.0 | 23.0 | 50.0 | 20.0 | 15.951 | O | 1 |
| A12291 | 6.0 | 24.0 | 50.0 | 20.0 | 15.594 | O | 1 |
| A12292 | 5.0 | 25.0 | 50.0 | 20.0 | 15.221 | O | 1 |
| A12293 | 4.0 | 26.0 | 50.0 | 20.0 | 14.803 | O | 1 |
| A12294 | 3.0 | 27.0 | 50.0 | 20.0 | 14.386 | O | 1 |
| A12295 | 2.0 | 28.0 | 50.0 | 20.0 | 13.968 | O | 1 |
| A12296 | 1.0 | 29.0 | 50.0 | 20.0 | 13.550 | O | 1 |
| A12297 | 0.0 | 30.0 | 50.0 | 20.0 | 13.132 | O | 1 |
| A12298 | 14.0 | 6.0 | 60.0 | 20.0 | 19.008 | X | 1 |
| A12299 | 13.9 | 6.1 | 60.0 | 20.0 | 18.973 | O | 1 |
| A12300 | 13.0 | 7.0 | 60.0 | 20.0 | 18.651 | O | 1 |
| A12301 | 10.0 | 10.0 | 60.0 | 20.0 | 17.581 | O | 1 |
| A12302 | 9.0 | 11.0 | 60.0 | 20.0 | 17.224 | O | 1 |
| A12303 | 8.0 | 12.0 | 60.0 | 20.0 | 16.867 | O | 1 |
| A12304 | 7.0 | 13.0 | 60.0 | 20.0 | 16.511 | O | 1 |
| A12305 | 6.0 | 14.0 | 60.0 | 20.0 | 16.154 | O | 1 |
| A12306 | 5.0 | 15.0 | 60.0 | 20.0 | 15.797 | O | 1 |
| A12307 | 4.0 | 16.0 | 60.0 | 20.0 | 15.436 | O | 1 |
| A12308 | 3.0 | 17.0 | 60.0 | 20.0 | 15.018 | O | 1 |

[Table 463]

| A12309 | 2.0 | 18.0 | 60.0 | 20.0 | 14.600 | O | 1 |
|---|---|---|---|---|---|---|---|
| A12310 | 1.0 | 19.0 | 60.0 | 20.0 | 14.182 | O | 1 |
| A12311 | 0.0 | 20.0 | 60.0 | 20.0 | 13.764 | O | 1 |
| A12312 | 22.0 | 38.0 | 10.0 | 30.0 | 19.064 | X | 1 |
| A12313 | 21.9 | 38.1 | 10.0 | 30.0 | 19.029 | X | 1 |
| A12314 | 21.8 | 38.2 | 10.0 | 30.0 | 18.993 | O | 1 |
| A12315 | 21.0 | 39.0 | 10.0 | 30.0 | 18.707 | O | 1 |
| A12316 | 20.0 | 40.0 | 10.0 | 30.0 | 18.351 | O | 1 |
| A12317 | 15.0 | 45.0 | 10.0 | 30.0 | 16.567 | O | 1 |
| A12318 | 10.0 | 50.0 | 10.0 | 30.0 | 14.782 | O | 1 |
| A12319 | 9.0 | 51.0 | 10.0 | 30.0 | 14.385 | O | 1 |
| A12320 | 8.0 | 52.0 | 10.0 | 30.0 | 13.967 | O | 1 |
| A12321 | 7.0 | 53.0 | 10.0 | 30.0 | 13.549 | O | 1 |
| A12322 | 6.0 | 54.0 | 10.0 | 30.0 | 13.131 | O | 1 |
| A12323 | 5.0 | 55.0 | 10.0 | 30.0 | 12.713 | O | 1 |
| A12324 | 4.0 | 56.0 | 10.0 | 30.0 | 12.295 | O | 1 |
| A12325 | 3.0 | 57.0 | 10.0 | 30.0 | 11.877 | O | 1 |
| A12326 | 2.0 | 58.0 | 10.0 | 30.0 | 11.460 | O | 1 |
| A12327 | 1.0 | 59.0 | 10.0 | 30.0 | 11.042 | O | 1 |
| A12328 | 0.0 | 60.0 | 10.0 | 30.0 | 10.624 | O | 1 |
| A12329 | 21.0 | 29.0 | 20.0 | 30.0 | 19.267 | X | 1 |
| A12330 | 20.3 | 29.7 | 20.0 | 30.0 | 19.017 | X | 1 |
| A12331 | 20.2 | 29.8 | 20.0 | 30.0 | 18.982 | O | 1 |
| A12332 | 20.0 | 30.0 | 20.0 | 30.0 | 18.910 | O | 1 |
| A12333 | 15.0 | 35.0 | 20.0 | 30.0 | 17.126 | O | 1 |
| A12334 | 10.0 | 40.0 | 20.0 | 30.0 | 15.342 | O | 1 |
| A12335 | 9.0 | 41.0 | 20.0 | 30.0 | 14.985 | O | 1 |
| A12336 | 8.0 | 42.0 | 20.0 | 30.0 | 14.599 | O | 1 |
| A12337 | 7.0 | 43.0 | 20.0 | 30.0 | 14.181 | O | 1 |
| A12338 | 6.0 | 44.0 | 20.0 | 30.0 | 13.763 | O | 1 |
| A12339 | 5.0 | 45.0 | 20.0 | 30.0 | 13.346 | O | 1 |
| A12340 | 4.0 | 46.0 | 20.0 | 30.0 | 12.928 | O | 1 |
| A12341 | 3.0 | 47.0 | 20.0 | 30.0 | 12.510 | O | 1 |
| A12342 | 2.0 | 48.0 | 20.0 | 30.0 | 12.092 | O | 1 |
| A12343 | 1.0 | 49.0 | 20.0 | 30.0 | 11.674 | O | 1 |
| A12344 | 0.0 | 50.0 | 20.0 | 30.0 | 11.256 | O | 1 |
| A12345 | 19.0 | 21.0 | 30.0 | 30.0 | 19.113 | X | 1 |
| A12346 | 18.7 | 21.3 | 30.0 | 30.0 | 19.006 | X | 1 |
| A12347 | 18.6 | 21.4 | 30.0 | 30.0 | 18.971 | O | 1 |
| A12348 | 18.0 | 22.0 | 30.0 | 30.0 | 18.757 | O | 1 |
| A12349 | 15.0 | 25.0 | 30.0 | 30.0 | 17.686 | O | 1 |
| A12350 | 10.0 | 30.0 | 30.0 | 30.0 | 15.902 | O | 1 |
| A12351 | 9.0 | 31.0 | 30.0 | 30.0 | 15.545 | O | 1 |
| A12352 | 8.0 | 32.0 | 30.0 | 30.0 | 15.188 | O | 1 |
| A12353 | 7.0 | 33.0 | 30.0 | 30.0 | 14.814 | O | 1 |
| A12354 | 6.0 | 34.0 | 30.0 | 30.0 | 14.396 | O | 1 |
| A12355 | 5.0 | 35.0 | 30.0 | 30.0 | 13.978 | O | 1 |
| A12356 | 4.0 | 36.0 | 30.0 | 30.0 | 13.560 | O | 1 |
| A12357 | 3.0 | 37.0 | 30.0 | 30.0 | 13.142 | O | 1 |
| A12358 | 2.0 | 38.0 | 30.0 | 30.0 | 12.724 | O | 1 |

[Table 464]

| | | | | | | | |
|---|---|---|---|---|---|---|---|
| A12359 | 1.0 | 39.0 | 30.0 | 30.0 | 12.306 | O | 1 |
| A12360 | 0.0 | 40.0 | 30.0 | 30.0 | 11.888 | O | 1 |
| A12361 | 18.0 | 12.0 | 40.0 | 30.0 | 19.316 | X | 1 |
| A12362 | 17.2 | 12.8 | 40.0 | 30.0 | 19.031 | X | 1 |
| A12363 | 17.1 | 12.9 | 40.0 | 30.0 | 18.995 | O | 1 |
| A12364 | 17.0 | 13.0 | 40.0 | 30.0 | 18.960 | O | 1 |
| A12365 | 15.0 | 15.0 | 40.0 | 30.0 | 18.246 | O | 1 |
| A12366 | 10.0 | 20.0 | 40.0 | 30.0 | 16.462 | O | 1 |
| A12367 | 9.0 | 21.0 | 40.0 | 30.0 | 16.105 | O | 1 |
| A12368 | 8.0 | 22.0 | 40.0 | 30.0 | 15.748 | O | 1 |
| A12369 | 7.0 | 23.0 | 40.0 | 30.0 | 15.392 | O | 1 |
| A12370 | 6.0 | 24.0 | 40.0 | 30.0 | 15.028 | O | 1 |
| A12371 | 5.0 | 25.0 | 40.0 | 30.0 | 14.610 | O | 1 |
| A12372 | 4.0 | 26.0 | 40.0 | 30.0 | 14.192 | O | 1 |
| A12373 | 3.0 | 27.0 | 40.0 | 30.0 | 13.774 | O | 1 |
| A12374 | 2.0 | 28.0 | 40.0 | 30.0 | 13.356 | O | 1 |
| A12375 | 1.0 | 29.0 | 40.0 | 30.0 | 12.938 | O | 1 |
| A12376 | 0.0 | 30.0 | 40.0 | 30.0 | 12.520 | O | 1 |
| A12377 | 16.0 | 4.0 | 50.0 | 30.0 | 19.163 | X | 1 |
| A12378 | 15.6 | 4.4 | 50.0 | 30.0 | 19.020 | X | 1 |
| A12379 | 15.5 | 4.5 | 50.0 | 30.0 | 18.984 | O | 1 |
| A12380 | 15.0 | 5.0 | 50.0 | 30.0 | 18.806 | O | 1 |
| A12381 | 10.0 | 10.0 | 50.0 | 30.0 | 17.022 | O | 1 |
| A12382 | 9.0 | 11.0 | 50.0 | 30.0 | 16.665 | O | 1 |
| A12383 | 8.0 | 12.0 | 50.0 | 30.0 | 16.308 | O | 1 |
| A12384 | 7.0 | 13.0 | 50.0 | 30.0 | 15.951 | O | 1 |
| A12385 | 6.0 | 14.0 | 50.0 | 30.0 | 15.595 | O | 1 |
| A12386 | 5.0 | 15.0 | 50.0 | 30.0 | 15.238 | O | 1 |
| A12387 | 4.0 | 16.0 | 50.0 | 30.0 | 14.824 | O | 1 |
| A12388 | 3.0 | 17.0 | 50.0 | 30.0 | 14.406 | O | 1 |
| A12389 | 2.0 | 18.0 | 50.0 | 30.0 | 13.988 | O | 1 |
| A12390 | 1.0 | 19.0 | 50.0 | 30.0 | 13.571 | O | 1 |
| A12391 | 0.0 | 20.0 | 50.0 | 30.0 | 13.153 | O | 1 |
| A12392 | 22.0 | 28.0 | 10.0 | 40.0 | 19.065 | X | 1 |
| A12393 | 21.9 | 28.1 | 10.0 | 40.0 | 19.029 | X | 1 |
| A12394 | 21.8 | 28.2 | 10.0 | 40.0 | 18.993 | O | 1 |
| A12395 | 21.0 | 29.0 | 10.0 | 40.0 | 18.708 | O | 1 |
| A12396 | 20.0 | 30.0 | 10.0 | 40.0 | 18.351 | O | 1 |
| A12397 | 15.0 | 35.0 | 10.0 | 40.0 | 16.567 | O | 1 |
| A12398 | 10.0 | 40.0 | 10.0 | 40.0 | 14.783 | O | 1 |
| A12399 | 9.0 | 41.0 | 10.0 | 40.0 | 14.406 | O | 1 |
| A12400 | 8.0 | 42.0 | 10.0 | 40.0 | 13.988 | O | 1 |
| A12401 | 7.0 | 43.0 | 10.0 | 40.0 | 13.570 | O | 1 |
| A12402 | 6.0 | 44.0 | 10.0 | 40.0 | 13.152 | O | 1 |
| A12403 | 5.0 | 45.0 | 10.0 | 40.0 | 12.734 | O | 1 |
| A12404 | 4.0 | 46.0 | 10.0 | 40.0 | 12.316 | O | 1 |
| A12405 | 3.0 | 47.0 | 10.0 | 40.0 | 11.898 | O | 1 |
| A12406 | 2.0 | 48.0 | 10.0 | 40.0 | 11.480 | O | 1 |
| A12407 | 1.0 | 49.0 | 10.0 | 40.0 | 11.063 | O | 1 |
| A12408 | 0.0 | 50.0 | 10.0 | 40.0 | 10.645 | O | 1 |

[Table 465]

| A12409 | 21.0 | 19.0 | 20.0 | 40.0 | 19.268 | X | 1 |
|---|---|---|---|---|---|---|---|
| A12410 | 20.3 | 19.7 | 20.0 | 40.0 | 19.018 | X | 1 |
| A12411 | 20.2 | 19.8 | 20.0 | 40.0 | 18.982 | O | 1 |
| A12412 | 20.0 | 20.0 | 20.0 | 40.0 | 18.911 | O | 1 |
| A12413 | 15.0 | 25.0 | 20.0 | 40.0 | 17.127 | O | 1 |
| A12414 | 10.0 | 30.0 | 20.0 | 40.0 | 15.343 | O | 1 |
| A12415 | 9.0 | 31.0 | 20.0 | 40.0 | 14.986 | O | 1 |
| A12416 | 8.0 | 32.0 | 20.0 | 40.0 | 14.620 | O | 1 |
| A12417 | 7.0 | 33.0 | 20.0 | 40.0 | 14.202 | O | 1 |
| A12418 | 6.0 | 34.0 | 20.0 | 40.0 | 13.784 | O | 1 |
| A12419 | 5.0 | 35.0 | 20.0 | 40.0 | 13.366 | O | 1 |
| A12420 | 4.0 | 36.0 | 20.0 | 40.0 | 12.949 | O | 1 |
| A12421 | 3.0 | 37.0 | 20.0 | 40.0 | 12.531 | O | 1 |
| A12422 | 2.0 | 38.0 | 20.0 | 40.0 | 12.113 | O | 1 |
| A12423 | 1.0 | 39.0 | 20.0 | 40.0 | 11.695 | O | 1 |
| A12424 | 0.0 | 40.0 | 20.0 | 40.0 | 11.277 | O | 1 |
| A12425 | 19.0 | 11.0 | 30.0 | 40.0 | 19.114 | X | 1 |
| A12426 | 18.7 | 11.3 | 30.0 | 40.0 | 19.007 | X | 1 |
| A12427 | 18.6 | 11.4 | 30.0 | 40.0 | 18.971 | O | 1 |
| A12428 | 18.0 | 12.0 | 30.0 | 40.0 | 18.757 | O | 1 |
| A12429 | 15.0 | 15.0 | 30.0 | 40.0 | 17.687 | O | 1 |
| A12430 | 10.0 | 20.0 | 30.0 | 40.0 | 15.903 | O | 1 |
| A12431 | 9.0 | 21.0 | 30.0 | 40.0 | 15.546 | O | 1 |
| A12432 | 8.0 | 22.0 | 30.0 | 40.0 | 15.189 | O | 1 |
| A12433 | 7.0 | 23.0 | 30.0 | 40.0 | 14.832 | O | 1 |
| A12434 | 6.0 | 24.0 | 30.0 | 40.0 | 14.417 | O | 1 |
| A12435 | 5.0 | 25.0 | 30.0 | 40.0 | 13.999 | O | 1 |
| A12436 | 4.0 | 26.0 | 30.0 | 40.0 | 13.581 | O | 1 |
| A12437 | 3.0 | 27.0 | 30.0 | 40.0 | 13.163 | O | 1 |
| A12438 | 2.0 | 28.0 | 30.0 | 40.0 | 12.745 | O | 1 |
| A12439 | 1.0 | 29.0 | 30.0 | 40.0 | 12.327 | O | 1 |
| A12440 | 0.0 | 30.0 | 30.0 | 40.0 | 11.909 | O | 1 |
| A12441 | 18.0 | 2.0 | 40.0 | 40.0 | 19.317 | X | 1 |
| A12442 | 17.2 | 2.8 | 40.0 | 40.0 | 19.032 | X | 1 |
| A12443 | 17.1 | 2.9 | 40.0 | 40.0 | 18.996 | O | 1 |
| A12444 | 17.0 | 3.0 | 40.0 | 40.0 | 18.960 | O | 1 |
| A12445 | 15.0 | 5.0 | 40.0 | 40.0 | 18.247 | O | 1 |
| A12446 | 10.0 | 10.0 | 40.0 | 40.0 | 16.463 | O | 1 |
| A12447 | 9.0 | 11.0 | 40.0 | 40.0 | 16.106 | O | 1 |
| A12448 | 8.0 | 12.0 | 40.0 | 40.0 | 15.749 | O | 1 |
| A12449 | 7.0 | 13.0 | 40.0 | 40.0 | 15.392 | O | 1 |
| A12450 | 6.0 | 14.0 | 40.0 | 40.0 | 15.035 | O | 1 |
| A12451 | 5.0 | 15.0 | 40.0 | 40.0 | 14.631 | O | 1 |
| A12452 | 4.0 | 16.0 | 40.0 | 40.0 | 14.213 | O | 1 |
| A12453 | 3.0 | 17.0 | 40.0 | 40.0 | 13.795 | O | 1 |
| A12454 | 2.0 | 18.0 | 40.0 | 40.0 | 13.377 | O | 1 |
| A12455 | 1.0 | 19.0 | 40.0 | 40.0 | 12.959 | O | 1 |
| A12456 | 0.0 | 20.0 | 40.0 | 40.0 | 12.541 | O | 1 |
| A12457 | 22.0 | 18.0 | 10.0 | 50.0 | 19.065 | X | 1 |
| A12458 | 21.9 | 18.1 | 10.0 | 50.0 | 19.030 | X | 1 |

[Table 466]

| A12459 | 21.8 | 18.2 | 10.0 | 50.0 | 18.994 | O | 1 |
|---|---|---|---|---|---|---|---|
| A12460 | 21.0 | 19.0 | 10.0 | 50.0 | 18.709 | O | 1 |
| A12461 | 20.0 | 20.0 | 10.0 | 50.0 | 18.352 | O | 1 |
| A12462 | 15.0 | 25.0 | 10.0 | 50.0 | 16.568 | O | 1 |
| A12463 | 10.0 | 30.0 | 10.0 | 50.0 | 14.784 | O | 1 |
| A12464 | 9.0 | 31.0 | 10.0 | 50.0 | 14.427 | O | 1 |
| A12465 | 8.0 | 32.0 | 10.0 | 50.0 | 14.009 | O | 1 |
| A12466 | 7.0 | 33.0 | 10.0 | 50.0 | 13.591 | O | 1 |
| A12467 | 6.0 | 34.0 | 10.0 | 50.0 | 13.173 | O | 1 |
| A12468 | 5.0 | 35.0 | 10.0 | 50.0 | 12.755 | O | 1 |
| A12469 | 4.0 | 36.0 | 10.0 | 50.0 | 12.337 | O | 1 |
| A12470 | 3.0 | 37.0 | 10.0 | 50.0 | 11.919 | O | 1 |
| A12471 | 2.0 | 38.0 | 10.0 | 50.0 | 11.501 | O | 1 |
| A12472 | 1.0 | 39.0 | 10.0 | 50.0 | 11.083 | O | 1 |
| A12473 | 0.0 | 40.0 | 10.0 | 50.0 | 10.666 | O | 1 |
| A12474 | 21.0 | 9.0 | 20.0 | 50.0 | 19.268 | X | 1 |
| A12475 | 20.3 | 9.7 | 20.0 | 50.0 | 19.019 | X | 1 |
| A12476 | 20.2 | 9.8 | 20.0 | 50.0 | 18.983 | O | 1 |
| A12477 | 20.0 | 10.0 | 20.0 | 50.0 | 18.912 | O | 1 |
| A12478 | 15.0 | 15.0 | 20.0 | 50.0 | 17.128 | O | 1 |
| A12479 | 10.0 | 20.0 | 20.0 | 50.0 | 15.343 | O | 1 |
| A12480 | 9.0 | 21.0 | 20.0 | 50.0 | 14.987 | O | 1 |
| A12481 | 8.0 | 22.0 | 20.0 | 50.0 | 14.630 | O | 1 |
| A12482 | 7.0 | 23.0 | 20.0 | 50.0 | 14.223 | O | 1 |
| A12483 | 6.0 | 24.0 | 20.0 | 50.0 | 13.805 | O | 1 |
| A12484 | 5.0 | 25.0 | 20.0 | 50.0 | 13.387 | O | 1 |
| A12485 | 4.0 | 26.0 | 20.0 | 50.0 | 12.969 | O | 1 |
| A12486 | 3.0 | 27.0 | 20.0 | 50.0 | 12.552 | O | 1 |
| A12487 | 2.0 | 28.0 | 20.0 | 50.0 | 12.134 | O | 1 |
| A12488 | 1.0 | 29.0 | 20.0 | 50.0 | 11.716 | O | 1 |
| A12489 | 0.0 | 30.0 | 20.0 | 50.0 | 11.298 | O | 1 |
| A12490 | 19.0 | 1.0 | 30.0 | 50.0 | 19.115 | X | 1 |
| A12491 | 18.7 | 1.3 | 30.0 | 50.0 | 19.008 | X | 1 |
| A12492 | 18.6 | 1.4 | 30.0 | 50.0 | 18.972 | O | 1 |
| A12493 | 18.0 | 2.0 | 30.0 | 50.0 | 18.758 | O | 1 |
| A12494 | 15.0 | 5.0 | 30.0 | 50.0 | 17.687 | O | 1 |
| A12495 | 10.0 | 10.0 | 30.0 | 50.0 | 15.903 | O | 1 |
| A12496 | 9.0 | 11.0 | 30.0 | 50.0 | 15.546 | O | 1 |
| A12497 | 8.0 | 12.0 | 30.0 | 50.0 | 15.190 | O | 1 |
| A12498 | 7.0 | 13.0 | 30.0 | 50.0 | 14.833 | O | 1 |
| A12499 | 6.0 | 14.0 | 30.0 | 50.0 | 14.438 | O | 1 |
| A12500 | 5.0 | 15.0 | 30.0 | 50.0 | 14.020 | O | 1 |
| A12501 | 4.0 | 16.0 | 30.0 | 50.0 | 13.602 | O | 1 |
| A12502 | 3.0 | 17.0 | 30.0 | 50.0 | 13.184 | O | 1 |
| A12503 | 2.0 | 18.0 | 30.0 | 50.0 | 12.766 | O | 1 |
| A12504 | 1.0 | 19.0 | 30.0 | 50.0 | 12.348 | O | 1 |
| A12505 | 0.0 | 20.0 | 30.0 | 50.0 | 11.930 | O | 1 |
| A12506 | 22.0 | 8.0 | 10.0 | 60.0 | 19.066 | X | 1 |
| A12507 | 21.9 | 8.1 | 10.0 | 60.0 | 19.030 | X | 1 |
| A12508 | 21.8 | 8.2 | 10.0 | 60.0 | 18.995 | O | 1 |

[Table 467]

| A12509 | 21.0 | 9.0 | 10.0 | 60.0 | 18.709 | O | 1 |
| A12510 | 20.0 | 10.0 | 10.0 | 60.0 | 18.352 | O | 1 |
| A12511 | 15.0 | 15.0 | 10.0 | 60.0 | 16.568 | O | 1 |
| A12512 | 10.0 | 20.0 | 10.0 | 60.0 | 14.784 | O | 1 |
| A12513 | 9.0 | 21.0 | 10.0 | 60.0 | 14.427 | O | 1 |
| A12514 | 8.0 | 22.0 | 10.0 | 60.0 | 14.030 | O | 1 |
| A12515 | 7.0 | 23.0 | 10.0 | 60.0 | 13.612 | O | 1 |
| A12516 | 6.0 | 24.0 | 10.0 | 60.0 | 13.194 | O | 1 |
| A12517 | 5.0 | 25.0 | 10.0 | 60.0 | 12.776 | O | 1 |
| A12518 | 4.0 | 26.0 | 10.0 | 60.0 | 12.358 | O | 1 |
| A12519 | 3.0 | 27.0 | 10.0 | 60.0 | 11.940 | O | 1 |
| A12520 | 2.0 | 28.0 | 10.0 | 60.0 | 11.522 | O | 1 |
| A12521 | 1.0 | 29.0 | 10.0 | 60.0 | 11.104 | O | 1 |
| A12522 | 0.0 | 30.0 | 10.0 | 60.0 | 10.686 | O | 1 |

Tables 468 to 480 show the composition, combustion heat amount, and GWP of the working medium of a four-component system of propane, HFO-1123, HFO-1132(E), and HFC-32.

[Table 468]

| Case | propane | HFO-1123 | HFO-1132(E) | HFC-32 | Heat of Combustion | Evaluation | GWP |
|------|---------|----------|-------------|--------|--------------------|------------|-----|
| A12523 | 22.0 | 66.0 | 10.0 | 2.0 | 19.040 | X | 15 |
| A12524 | 21.9 | 66.1 | 10.0 | 2.0 | 19.005 | X | 15 |
| A12525 | 21.8 | 66.2 | 10.0 | 2.0 | 18.969 | O | 15 |
| A12526 | 21.0 | 67.0 | 10.0 | 2.0 | 18.684 | O | 15 |
| A12527 | 20.0 | 68.0 | 10.0 | 2.0 | 18.327 | O | 15 |
| A12528 | 15.0 | 73.0 | 10.0 | 2.0 | 16.543 | O | 15 |
| A12529 | 10.0 | 78.0 | 10.0 | 2.0 | 14.733 | O | 15 |
| A12530 | 9.0 | 79.0 | 10.0 | 2.0 | 14.315 | O | 15 |
| A12531 | 8.0 | 80.0 | 10.0 | 2.0 | 13.897 | O | 15 |
| A12532 | 7.0 | 81.0 | 10.0 | 2.0 | 13.479 | O | 15 |
| A12533 | 6.0 | 82.0 | 10.0 | 2.0 | 13.061 | O | 15 |
| A12534 | 5.0 | 83.0 | 10.0 | 2.0 | 12.643 | O | 15 |
| A12535 | 4.0 | 84.0 | 10.0 | 2.0 | 12.225 | O | 15 |
| A12536 | 3.0 | 85.0 | 10.0 | 2.0 | 11.807 | O | 15 |
| A12537 | 2.0 | 86.0 | 10.0 | 2.0 | 11.389 | O | 15 |
| A12538 | 1.0 | 87.0 | 10.0 | 2.0 | 10.971 | O | 15 |
| A12539 | 0.0 | 88.0 | 10.0 | 2.0 | 10.553 | O | 15 |
| A12540 | 21.0 | 57.0 | 20.0 | 2.0 | 19.243 | X | 15 |
| A12541 | 20.4 | 57.6 | 20.0 | 2.0 | 19.029 | X | 15 |
| A12542 | 20.3 | 57.7 | 20.0 | 2.0 | 18.994 | O | 15 |
| A12543 | 20.0 | 58.0 | 20.0 | 2.0 | 18.887 | O | 15 |
| A12544 | 15.0 | 63.0 | 20.0 | 2.0 | 17.103 | O | 15 |
| A12545 | 10.0 | 68.0 | 20.0 | 2.0 | 15.318 | O | 15 |
| A12546 | 9.0 | 69.0 | 20.0 | 2.0 | 14.947 | O | 15 |
| A12547 | 8.0 | 70.0 | 20.0 | 2.0 | 14.529 | O | 15 |
| A12548 | 7.0 | 71.0 | 20.0 | 2.0 | 14.111 | O | 15 |
| A12549 | 6.0 | 72.0 | 20.0 | 2.0 | 13.693 | O | 15 |
| A12550 | 5.0 | 73.0 | 20.0 | 2.0 | 13.275 | O | 15 |
| A12551 | 4.0 | 74.0 | 20.0 | 2.0 | 12.857 | O | 15 |
| A12552 | 3.0 | 75.0 | 20.0 | 2.0 | 12.439 | O | 15 |
| A12553 | 2.0 | 76.0 | 20.0 | 2.0 | 12.021 | O | 15 |
| A12554 | 1.0 | 77.0 | 20.0 | 2.0 | 11.604 | O | 15 |
| A12555 | 0.0 | 78.0 | 20.0 | 2.0 | 11.186 | O | 15 |
| A12556 | 19.0 | 49.0 | 30.0 | 2.0 | 19.090 | X | 15 |
| A12557 | 18.8 | 49.2 | 30.0 | 2.0 | 19.018 | X | 15 |
| A12558 | 18.7 | 49.3 | 30.0 | 2.0 | 18.983 | O | 15 |
| A12559 | 18.0 | 50.0 | 30.0 | 2.0 | 18.733 | O | 15 |
| A12560 | 15.0 | 53.0 | 30.0 | 2.0 | 17.662 | O | 15 |
| A12561 | 10.0 | 58.0 | 30.0 | 2.0 | 15.878 | O | 15 |
| A12562 | 9.0 | 59.0 | 30.0 | 2.0 | 15.521 | O | 15 |
| A12563 | 8.0 | 60.0 | 30.0 | 2.0 | 15.161 | O | 15 |
| A12564 | 7.0 | 61.0 | 30.0 | 2.0 | 14.743 | O | 15 |
| A12565 | 6.0 | 62.0 | 30.0 | 2.0 | 14.325 | O | 15 |
| A12566 | 5.0 | 63.0 | 30.0 | 2.0 | 13.907 | O | 15 |
| A12567 | 4.0 | 64.0 | 30.0 | 2.0 | 13.490 | O | 15 |
| A12568 | 3.0 | 65.0 | 30.0 | 2.0 | 13.072 | O | 15 |
| A12569 | 2.0 | 66.0 | 30.0 | 2.0 | 12.654 | O | 15 |
| A12570 | 1.0 | 67.0 | 30.0 | 2.0 | 12.236 | O | 15 |
| A12571 | 0.0 | 68.0 | 30.0 | 2.0 | 11.818 | O | 15 |
| A12572 | 18.0 | 40.0 | 40.0 | 2.0 | 19.293 | X | 15 |

[Table 469]

| A12573 | 17.2 | 40.8 | 40.0 | 2.0 | 19.007 | X | 15 |
|--------|------|------|------|-----|--------|---|----|
| A12574 | 17.1 | 40.9 | 40.0 | 2.0 | 18.971 | O | 15 |
| A12575 | 17.0 | 41.0 | 40.0 | 2.0 | 18.936 | O | 15 |
| A12576 | 15.0 | 43.0 | 40.0 | 2.0 | 18.222 | O | 15 |
| A12577 | 10.0 | 48.0 | 40.0 | 2.0 | 16.438 | O | 15 |
| A12578 | 9.0 | 49.0 | 40.0 | 2.0 | 16.081 | O | 15 |
| A12579 | 8.0 | 50.0 | 40.0 | 2.0 | 15.724 | O | 15 |
| A12580 | 7.0 | 51.0 | 40.0 | 2.0 | 15.368 | O | 15 |
| A12581 | 6.0 | 52.0 | 40.0 | 2.0 | 14.958 | O | 15 |
| A12582 | 5.0 | 53.0 | 40.0 | 2.0 | 14.540 | O | 15 |
| A12583 | 4.0 | 54.0 | 40.0 | 2.0 | 14.122 | O | 15 |
| A12584 | 3.0 | 55.0 | 40.0 | 2.0 | 13.704 | O | 15 |
| A12585 | 2.0 | 56.0 | 40.0 | 2.0 | 13.286 | O | 15 |
| A12586 | 1.0 | 57.0 | 40.0 | 2.0 | 12.868 | O | 15 |
| A12587 | 0.0 | 58.0 | 40.0 | 2.0 | 12.450 | O | 15 |
| A12588 | 16.0 | 32.0 | 50.0 | 2.0 | 19.139 | X | 15 |
| A12589 | 15.7 | 32.3 | 50.0 | 2.0 | 19.032 | X | 15 |
| A12590 | 15.6 | 32.4 | 50.0 | 2.0 | 18.996 | O | 15 |
| A12591 | 15.0 | 33.0 | 50.0 | 2.0 | 18.782 | O | 15 |
| A12592 | 10.0 | 38.0 | 50.0 | 2.0 | 16.998 | O | 15 |
| A12593 | 9.0 | 39.0 | 50.0 | 2.0 | 16.641 | O | 15 |
| A12594 | 8.0 | 40.0 | 50.0 | 2.0 | 16.284 | O | 15 |
| A12595 | 7.0 | 41.0 | 50.0 | 2.0 | 15.928 | O | 15 |
| A12596 | 6.0 | 42.0 | 50.0 | 2.0 | 15.571 | O | 15 |
| A12597 | 5.0 | 43.0 | 50.0 | 2.0 | 15.172 | O | 15 |
| A12598 | 4.0 | 44.0 | 50.0 | 2.0 | 14.754 | O | 15 |
| A12599 | 3.0 | 45.0 | 50.0 | 2.0 | 14.336 | O | 15 |
| A12600 | 2.0 | 46.0 | 50.0 | 2.0 | 13.918 | O | 15 |
| A12601 | 1.0 | 47.0 | 50.0 | 2.0 | 13.500 | O | 15 |
| A12602 | 0.0 | 48.0 | 50.0 | 2.0 | 13.082 | O | 15 |
| A12603 | 15.0 | 23.0 | 60.0 | 2.0 | 19.342 | X | 15 |
| A12604 | 14.1 | 23.9 | 60.0 | 2.0 | 19.021 | X | 15 |
| A12605 | 14.0 | 24.0 | 60.0 | 2.0 | 18.985 | O | 15 |
| A12606 | 10.0 | 28.0 | 60.0 | 2.0 | 17.558 | O | 15 |
| A12607 | 9.0 | 29.0 | 60.0 | 2.0 | 17.201 | O | 15 |
| A12608 | 8.0 | 30.0 | 60.0 | 2.0 | 16.844 | O | 15 |
| A12609 | 7.0 | 31.0 | 60.0 | 2.0 | 16.487 | O | 15 |
| A12610 | 6.0 | 32.0 | 60.0 | 2.0 | 16.131 | O | 15 |
| A12611 | 5.0 | 33.0 | 60.0 | 2.0 | 15.774 | O | 15 |
| A12612 | 4.0 | 34.0 | 60.0 | 2.0 | 15.386 | O | 15 |
| A12613 | 3.0 | 35.0 | 60.0 | 2.0 | 14.968 | O | 15 |
| A12614 | 2.0 | 36.0 | 60.0 | 2.0 | 14.550 | O | 15 |
| A12615 | 1.0 | 37.0 | 60.0 | 2.0 | 14.132 | O | 15 |
| A12616 | 0.0 | 38.0 | 60.0 | 2.0 | 13.715 | O | 15 |
| A12617 | 13.0 | 15.0 | 70.0 | 2.0 | 19.188 | X | 15 |
| A12618 | 12.5 | 15.5 | 70.0 | 2.0 | 19.010 | X | 15 |
| A12619 | 12.4 | 15.6 | 70.0 | 2.0 | 18.974 | O | 15 |
| A12620 | 12.0 | 16.0 | 70.0 | 2.0 | 18.831 | O | 15 |
| A12621 | 10.0 | 18.0 | 70.0 | 2.0 | 18.118 | O | 15 |
| A12622 | 9.0 | 19.0 | 70.0 | 2.0 | 17.761 | O | 15 |

[Table 470]

| A12623 | 8.0 | 20.0 | 70.0 | 2.0 | 17.404 | O | 15 |
|---|---|---|---|---|---|---|---|
| A12624 | 7.0 | 21.0 | 70.0 | 2.0 | 17.047 | O | 15 |
| A12625 | 6.0 | 22.0 | 70.0 | 2.0 | 16.690 | O | 15 |
| A12626 | 5.0 | 23.0 | 70.0 | 2.0 | 16.334 | O | 15 |
| A12627 | 4.0 | 24.0 | 70.0 | 2.0 | 15.977 | O | 15 |
| A12628 | 3.0 | 25.0 | 70.0 | 2.0 | 15.601 | O | 15 |
| A12629 | 2.0 | 26.0 | 70.0 | 2.0 | 15.183 | O | 15 |
| A12630 | 1.0 | 27.0 | 70.0 | 2.0 | 14.765 | O | 15 |
| A12631 | 0.0 | 28.0 | 70.0 | 2.0 | 14.347 | O | 15 |
| A12632 | 11.0 | 7.0 | 80.0 | 2.0 | 19.034 | X | 15 |
| A12633 | 10.9 | 7.1 | 80.0 | 2.0 | 18.999 | O | 15 |
| A12634 | 10.0 | 8.0 | 80.0 | 2.0 | 18.677 | O | 15 |
| A12635 | 9.0 | 9.0 | 80.0 | 2.0 | 18.321 | O | 15 |
| A12636 | 8.0 | 10.0 | 80.0 | 2.0 | 17.964 | O | 15 |
| A12637 | 7.0 | 11.0 | 80.0 | 2.0 | 17.607 | O | 15 |
| A12638 | 6.0 | 12.0 | 80.0 | 2.0 | 17.250 | O | 15 |
| A12639 | 5.0 | 13.0 | 80.0 | 2.0 | 16.893 | O | 15 |
| A12640 | 4.0 | 14.0 | 80.0 | 2.0 | 16.537 | O | 15 |
| A12641 | 3.0 | 15.0 | 80.0 | 2.0 | 16.180 | O | 15 |
| A12642 | 2.0 | 16.0 | 80.0 | 2.0 | 15.815 | O | 15 |
| A12643 | 1.0 | 17.0 | 80.0 | 2.0 | 15.397 | O | 15 |
| A12644 | 0.0 | 18.0 | 80.0 | 2.0 | 14.979 | O | 15 |
| A12645 | 22.0 | 63.0 | 10.0 | 5.0 | 19.007 | X | 35 |
| A12646 | 21.9 | 63.1 | 10.0 | 5.0 | 18.972 | O | 35 |
| A12647 | 21.0 | 64.0 | 10.0 | 5.0 | 18.650 | O | 35 |
| A12648 | 20.0 | 65.0 | 10.0 | 5.0 | 18.294 | O | 35 |
| A12649 | 15.0 | 70.0 | 10.0 | 5.0 | 16.510 | O | 35 |
| A12650 | 10.0 | 75.0 | 10.0 | 5.0 | 14.721 | O | 35 |
| A12651 | 9.0 | 76.0 | 10.0 | 5.0 | 14.303 | O | 35 |
| A12652 | 8.0 | 77.0 | 10.0 | 5.0 | 13.885 | O | 35 |
| A12653 | 7.0 | 78.0 | 10.0 | 5.0 | 13.467 | O | 35 |
| A12654 | 6.0 | 79.0 | 10.0 | 5.0 | 13.049 | O | 35 |
| A12655 | 5.0 | 80.0 | 10.0 | 5.0 | 12.632 | O | 35 |
| A12656 | 4.0 | 81.0 | 10.0 | 5.0 | 12.214 | O | 35 |
| A12657 | 3.0 | 82.0 | 10.0 | 5.0 | 11.796 | O | 35 |
| A12658 | 2.0 | 83.0 | 10.0 | 5.0 | 11.378 | O | 35 |
| A12659 | 1.0 | 84.0 | 10.0 | 5.0 | 10.960 | O | 35 |
| A12660 | 0.0 | 85.0 | 10.0 | 5.0 | 10.542 | O | 35 |
| A12661 | 21.0 | 54.0 | 20.0 | 5.0 | 19.210 | X | 35 |
| A12662 | 20.5 | 54.5 | 20.0 | 5.0 | 19.032 | X | 35 |
| A12663 | 20.4 | 54.6 | 20.0 | 5.0 | 18.996 | O | 35 |
| A12664 | 20.0 | 55.0 | 20.0 | 5.0 | 18.853 | O | 35 |
| A12665 | 15.0 | 60.0 | 20.0 | 5.0 | 17.069 | O | 35 |
| A12666 | 10.0 | 65.0 | 20.0 | 5.0 | 15.285 | O | 35 |
| A12667 | 9.0 | 66.0 | 20.0 | 5.0 | 14.928 | O | 35 |
| A12668 | 8.0 | 67.0 | 20.0 | 5.0 | 14.518 | O | 35 |
| A12669 | 7.0 | 68.0 | 20.0 | 5.0 | 14.100 | O | 35 |
| A12670 | 6.0 | 69.0 | 20.0 | 5.0 | 13.682 | O | 35 |
| A12671 | 5.0 | 70.0 | 20.0 | 5.0 | 13.264 | O | 35 |
| A12672 | 4.0 | 71.0 | 20.0 | 5.0 | 12.846 | O | 35 |

[Table 471]

| A12673 | 3.0 | 72.0 | 20.0 | 5.0 | 12.428 | O | 35 |
|---|---|---|---|---|---|---|---|
| A12674 | 2.0 | 73.0 | 20.0 | 5.0 | 12.010 | O | 35 |
| A12675 | 1.0 | 74.0 | 20.0 | 5.0 | 11.592 | O | 35 |
| A12676 | 0.0 | 75.0 | 20.0 | 5.0 | 11.174 | O | 35 |
| A12677 | 19.0 | 46.0 | 30.0 | 5.0 | 19.056 | X | 35 |
| A12678 | 18.9 | 46.1 | 30.0 | 5.0 | 19.021 | X | 35 |
| A12679 | 18.8 | 46.2 | 30.0 | 5.0 | 18.985 | O | 35 |
| A12680 | 18.0 | 47.0 | 30.0 | 5.0 | 18.700 | O | 35 |
| A12681 | 15.0 | 50.0 | 30.0 | 5.0 | 17.629 | O | 35 |
| A12682 | 10.0 | 55.0 | 30.0 | 5.0 | 15.845 | O | 35 |
| A12683 | 9.0 | 56.0 | 30.0 | 5.0 | 15.488 | O | 35 |
| A12684 | 8.0 | 57.0 | 30.0 | 5.0 | 15.131 | O | 35 |
| A12685 | 7.0 | 58.0 | 30.0 | 5.0 | 14.732 | O | 35 |
| A12686 | 6.0 | 59.0 | 30.0 | 5.0 | 14.314 | O | 35 |
| A12687 | 5.0 | 60.0 | 30.0 | 5.0 | 13.896 | O | 35 |
| A12688 | 4.0 | 61.0 | 30.0 | 5.0 | 13.478 | O | 35 |
| A12689 | 3.0 | 62.0 | 30.0 | 5.0 | 13.060 | O | 35 |
| A12690 | 2.0 | 63.0 | 30.0 | 5.0 | 12.642 | O | 35 |
| A12691 | 1.0 | 64.0 | 30.0 | 5.0 | 12.224 | O | 35 |
| A12692 | 0.0 | 65.0 | 30.0 | 5.0 | 11.806 | O | 35 |
| A12693 | 18.0 | 37.0 | 40.0 | 5.0 | 19.259 | X | 35 |
| A12694 | 17.3 | 37.7 | 40.0 | 5.0 | 19.010 | X | 35 |
| A12695 | 17.2 | 37.8 | 40.0 | 5.0 | 18.974 | O | 35 |
| A12696 | 17.0 | 38.0 | 40.0 | 5.0 | 18.903 | O | 35 |
| A12697 | 15.0 | 40.0 | 40.0 | 5.0 | 18.189 | O | 35 |
| A12698 | 10.0 | 45.0 | 40.0 | 5.0 | 16.405 | O | 35 |
| A12699 | 9.0 | 46.0 | 40.0 | 5.0 | 16.048 | O | 35 |
| A12700 | 8.0 | 47.0 | 40.0 | 5.0 | 15.691 | O | 35 |
| A12701 | 7.0 | 48.0 | 40.0 | 5.0 | 15.335 | O | 35 |
| A12702 | 6.0 | 49.0 | 40.0 | 5.0 | 14.946 | O | 35 |
| A12703 | 5.0 | 50.0 | 40.0 | 5.0 | 14.528 | O | 35 |
| A12704 | 4.0 | 51.0 | 40.0 | 5.0 | 14.110 | O | 35 |
| A12705 | 3.0 | 52.0 | 40.0 | 5.0 | 13.692 | O | 35 |
| A12706 | 2.0 | 53.0 | 40.0 | 5.0 | 13.274 | O | 35 |
| A12707 | 1.0 | 54.0 | 40.0 | 5.0 | 12.857 | O | 35 |
| A12708 | 0.0 | 55.0 | 40.0 | 5.0 | 12.439 | O | 35 |
| A12709 | 16.0 | 29.0 | 50.0 | 5.0 | 19.106 | X | 35 |
| A12710 | 15.8 | 29.2 | 50.0 | 5.0 | 19.034 | X | 35 |
| A12711 | 15.7 | 29.3 | 50.0 | 5.0 | 18.999 | O | 35 |
| A12712 | 15.0 | 30.0 | 50.0 | 5.0 | 18.749 | O | 35 |
| A12713 | 10.0 | 35.0 | 50.0 | 5.0 | 16.965 | O | 35 |
| A12714 | 9.0 | 36.0 | 50.0 | 5.0 | 16.608 | O | 35 |
| A12715 | 8.0 | 37.0 | 50.0 | 5.0 | 16.251 | O | 35 |
| A12716 | 7.0 | 38.0 | 50.0 | 5.0 | 15.894 | O | 35 |
| A12717 | 6.0 | 39.0 | 50.0 | 5.0 | 15.538 | O | 35 |
| A12718 | 5.0 | 40.0 | 50.0 | 5.0 | 15.160 | O | 35 |
| A12719 | 4.0 | 41.0 | 50.0 | 5.0 | 14.743 | O | 35 |
| A12720 | 3.0 | 42.0 | 50.0 | 5.0 | 14.325 | O | 35 |
| A12721 | 2.0 | 43.0 | 50.0 | 5.0 | 13.907 | O | 35 |
| A12722 | 1.0 | 44.0 | 50.0 | 5.0 | 13.489 | O | 35 |

[Table 472]

| | | | | | | | |
|---|---|---|---|---|---|---|---|
| A12723 | 0.0 | 45.0 | 50.0 | 5.0 | 13.071 | O | 35 |
| A12724 | 15.0 | 20.0 | 60.0 | 5.0 | 19.309 | X | 35 |
| A12725 | 14.2 | 20.8 | 60.0 | 5.0 | 19.023 | X | 35 |
| A12726 | 14.1 | 20.9 | 60.0 | 5.0 | 18.988 | O | 35 |
| A12727 | 14.0 | 21.0 | 60.0 | 5.0 | 18.952 | O | 35 |
| A12728 | 10.0 | 25.0 | 60.0 | 5.0 | 17.525 | O | 35 |
| A12729 | 9.0 | 26.0 | 60.0 | 5.0 | 17.168 | O | 35 |
| A12730 | 8.0 | 27.0 | 60.0 | 5.0 | 16.811 | O | 35 |
| A12731 | 7.0 | 28.0 | 60.0 | 5.0 | 16.454 | O | 35 |
| A12732 | 6.0 | 29.0 | 60.0 | 5.0 | 16.097 | O | 35 |
| A12733 | 5.0 | 30.0 | 60.0 | 5.0 | 15.741 | O | 35 |
| A12734 | 4.0 | 31.0 | 60.0 | 5.0 | 15.375 | O | 35 |
| A12735 | 3.0 | 32.0 | 60.0 | 5.0 | 14.957 | O | 35 |
| A12736 | 2.0 | 33.0 | 60.0 | 5.0 | 14.539 | O | 35 |
| A12737 | 1.0 | 34.0 | 60.0 | 5.0 | 14.121 | O | 35 |
| A12738 | 0.0 | 35.0 | 60.0 | 5.0 | 13.703 | O | 35 |
| A12739 | 13.0 | 12.0 | 70.0 | 5.0 | 19.155 | X | 35 |
| A12740 | 12.6 | 12.4 | 70.0 | 5.0 | 19.012 | X | 35 |
| A12741 | 12.5 | 12.5 | 70.0 | 5.0 | 18.977 | O | 35 |
| A12742 | 12.0 | 13.0 | 70.0 | 5.0 | 18.798 | O | 35 |
| A12743 | 10.0 | 15.0 | 70.0 | 5.0 | 18.084 | O | 35 |
| A12744 | 9.0 | 16.0 | 70.0 | 5.0 | 17.728 | O | 35 |
| A12745 | 8.0 | 17.0 | 70.0 | 5.0 | 17.371 | O | 35 |
| A12746 | 7.0 | 18.0 | 70.0 | 5.0 | 17.014 | O | 35 |
| A12747 | 6.0 | 19.0 | 70.0 | 5.0 | 16.657 | O | 35 |
| A12748 | 5.0 | 20.0 | 70.0 | 5.0 | 16.300 | O | 35 |
| A12749 | 4.0 | 21.0 | 70.0 | 5.0 | 15.944 | O | 35 |
| A12750 | 3.0 | 22.0 | 70.0 | 5.0 | 15.587 | O | 35 |
| A12751 | 2.0 | 23.0 | 70.0 | 5.0 | 15.171 | O | 35 |
| A12752 | 1.0 | 24.0 | 70.0 | 5.0 | 14.753 | O | 35 |
| A12753 | 0.0 | 25.0 | 70.0 | 5.0 | 14.335 | O | 35 |
| A12754 | 11.0 | 4.0 | 80.0 | 5.0 | 19.001 | X | 35 |
| A12755 | 10.9 | 4.1 | 80.0 | 5.0 | 18.965 | O | 35 |
| A12756 | 10.0 | 5.0 | 80.0 | 5.0 | 18.644 | O | 35 |
| A12757 | 9.0 | 6.0 | 80.0 | 5.0 | 18.287 | O | 35 |
| A12758 | 8.0 | 7.0 | 80.0 | 5.0 | 17.931 | O | 35 |
| A12759 | 7.0 | 8.0 | 80.0 | 5.0 | 17.574 | O | 35 |
| A12760 | 6.0 | 9.0 | 80.0 | 5.0 | 17.217 | O | 35 |
| A12761 | 5.0 | 10.0 | 80.0 | 5.0 | 16.860 | O | 35 |
| A12762 | 4.0 | 11.0 | 80.0 | 5.0 | 16.503 | O | 35 |
| A12763 | 3.0 | 12.0 | 80.0 | 5.0 | 16.147 | O | 35 |
| A12764 | 2.0 | 13.0 | 80.0 | 5.0 | 15.790 | O | 35 |
| A12765 | 1.0 | 14.0 | 80.0 | 5.0 | 15.385 | O | 35 |
| A12766 | 0.0 | 15.0 | 80.0 | 5.0 | 14.968 | O | 35 |
| A12767 | 23.0 | 57.0 | 10.0 | 10.0 | 19.309 | X | 69 |
| A12768 | 22.2 | 57.8 | 10.0 | 10.0 | 19.023 | X | 69 |
| A12769 | 22.1 | 57.9 | 10.0 | 10.0 | 18.988 | O | 69 |
| A12770 | 22.0 | 58.0 | 10.0 | 10.0 | 18.952 | O | 69 |
| A12771 | 20.0 | 60.0 | 10.0 | 10.0 | 18.238 | O | 69 |
| A12772 | 15.0 | 65.0 | 10.0 | 10.0 | 16.454 | O | 69 |

[Table 473]

| A12773 | 10.0 | 70.0 | 10.0 | 10.0 | 14.670 | O | 69 |
|---|---|---|---|---|---|---|---|
| A12774 | 9.0 | 71.0 | 10.0 | 10.0 | 14.284 | O | 69 |
| A12775 | 8.0 | 72.0 | 10.0 | 10.0 | 13.866 | O | 69 |
| A12776 | 7.0 | 73.0 | 10.0 | 10.0 | 13.448 | O | 69 |
| A12777 | 6.0 | 74.0 | 10.0 | 10.0 | 13.030 | O | 69 |
| A12778 | 5.0 | 75.0 | 10.0 | 10.0 | 12.613 | O | 69 |
| A12779 | 4.0 | 76.0 | 10.0 | 10.0 | 12.195 | O | 69 |
| A12780 | 3.0 | 77.0 | 10.0 | 10.0 | 11.777 | O | 69 |
| A12781 | 2.0 | 78.0 | 10.0 | 10.0 | 11.359 | O | 69 |
| A12782 | 1.0 | 79.0 | 10.0 | 10.0 | 10.941 | O | 69 |
| A12783 | 0.0 | 80.0 | 10.0 | 10.0 | 10.523 | O | 69 |
| A12784 | 21.0 | 49.0 | 20.0 | 10.0 | 19.155 | X | 69 |
| A12785 | 20.6 | 49.4 | 20.0 | 10.0 | 19.012 | X | 69 |
| A12786 | 20.5 | 49.5 | 20.0 | 10.0 | 18.977 | O | 69 |
| A12787 | 20.0 | 50.0 | 20.0 | 10.0 | 18.798 | O | 69 |
| A12788 | 15.0 | 55.0 | 20.0 | 10.0 | 17.014 | O | 69 |
| A12789 | 10.0 | 60.0 | 20.0 | 10.0 | 15.230 | O | 69 |
| A12790 | 9.0 | 61.0 | 20.0 | 10.0 | 14.873 | O | 69 |
| A12791 | 8.0 | 62.0 | 20.0 | 10.0 | 14.498 | O | 69 |
| A12792 | 7.0 | 63.0 | 20.0 | 10.0 | 14.081 | O | 69 |
| A12793 | 6.0 | 64.0 | 20.0 | 10.0 | 13.663 | O | 69 |
| A12794 | 5.0 | 65.0 | 20.0 | 10.0 | 13.245 | O | 69 |
| A12795 | 4.0 | 66.0 | 20.0 | 10.0 | 12.827 | O | 69 |
| A12796 | 3.0 | 67.0 | 20.0 | 10.0 | 12.409 | O | 69 |
| A12797 | 2.0 | 68.0 | 20.0 | 10.0 | 11.991 | O | 69 |
| A12798 | 1.0 | 69.0 | 20.0 | 10.0 | 11.573 | O | 69 |
| A12799 | 0.0 | 70.0 | 20.0 | 10.0 | 11.155 | O | 69 |
| A12800 | 19.0 | 41.0 | 30.0 | 10.0 | 19.001 | X | 69 |
| A12801 | 18.9 | 41.1 | 30.0 | 10.0 | 18.966 | O | 69 |
| A12802 | 18.8 | 41.2 | 30.0 | 10.0 | 18.930 | O | 69 |
| A12803 | 18.0 | 42.0 | 30.0 | 10.0 | 18.644 | O | 69 |
| A12804 | 15.0 | 45.0 | 30.0 | 10.0 | 17.574 | O | 69 |
| A12805 | 10.0 | 50.0 | 30.0 | 10.0 | 15.790 | O | 69 |
| A12806 | 9.0 | 51.0 | 30.0 | 10.0 | 15.433 | O | 69 |
| A12807 | 8.0 | 52.0 | 30.0 | 10.0 | 15.076 | O | 69 |
| A12808 | 7.0 | 53.0 | 30.0 | 10.0 | 14.713 | O | 69 |
| A12809 | 6.0 | 54.0 | 30.0 | 10.0 | 14.295 | O | 69 |
| A12810 | 5.0 | 55.0 | 30.0 | 10.0 | 13.877 | O | 69 |
| A12811 | 4.0 | 56.0 | 30.0 | 10.0 | 13.459 | O | 69 |
| A12812 | 3.0 | 57.0 | 30.0 | 10.0 | 13.041 | O | 69 |
| A12813 | 2.0 | 58.0 | 30.0 | 10.0 | 12.623 | O | 69 |
| A12814 | 1.0 | 59.0 | 30.0 | 10.0 | 12.205 | O | 69 |
| A12815 | 0.0 | 60.0 | 30.0 | 10.0 | 11.787 | O | 69 |
| A12816 | 18.0 | 32.0 | 40.0 | 10.0 | 19.204 | X | 69 |
| A12817 | 17.5 | 32.5 | 40.0 | 10.0 | 19.026 | X | 69 |
| A12818 | 17.4 | 32.6 | 40.0 | 10.0 | 18.990 | O | 69 |
| A12819 | 17.0 | 33.0 | 40.0 | 10.0 | 18.847 | O | 69 |
| A12820 | 15.0 | 35.0 | 40.0 | 10.0 | 18.134 | O | 69 |
| A12821 | 10.0 | 40.0 | 40.0 | 10.0 | 16.350 | O | 69 |
| A12822 | 9.0 | 41.0 | 40.0 | 10.0 | 15.993 | O | 69 |

[Table 474]

| A12823 | 8.0 | 42.0 | 40.0 | 10.0 | 15.636 | O | 69 |
|--------|------|------|------|------|--------|---|----|
| A12824 | 7.0 | 43.0 | 40.0 | 10.0 | 15.279 | O | 69 |
| A12825 | 6.0 | 44.0 | 40.0 | 10.0 | 14.922 | O | 69 |
| A12826 | 5.0 | 45.0 | 40.0 | 10.0 | 14.509 | O | 69 |
| A12827 | 4.0 | 46.0 | 40.0 | 10.0 | 14.091 | O | 69 |
| A12828 | 3.0 | 47.0 | 40.0 | 10.0 | 13.673 | O | 69 |
| A12829 | 2.0 | 48.0 | 40.0 | 10.0 | 13.255 | O | 69 |
| A12830 | 1.0 | 49.0 | 40.0 | 10.0 | 12.838 | O | 69 |
| A12831 | 0.0 | 50.0 | 40.0 | 10.0 | 12.420 | O | 69 |
| A12832 | 16.0 | 24.0 | 50.0 | 10.0 | 19.050 | X | 69 |
| A12833 | 15.9 | 24.1 | 50.0 | 10.0 | 19.015 | X | 69 |
| A12834 | 15.8 | 24.2 | 50.0 | 10.0 | 18.979 | O | 69 |
| A12835 | 15.0 | 25.0 | 50.0 | 10.0 | 18.694 | O | 69 |
| A12836 | 10.0 | 30.0 | 50.0 | 10.0 | 16.910 | O | 69 |
| A12837 | 9.0 | 31.0 | 50.0 | 10.0 | 16.553 | O | 69 |
| A12838 | 8.0 | 32.0 | 50.0 | 10.0 | 16.196 | O | 69 |
| A12839 | 7.0 | 33.0 | 50.0 | 10.0 | 15.839 | O | 69 |
| A12840 | 6.0 | 34.0 | 50.0 | 10.0 | 15.482 | O | 69 |
| A12841 | 5.0 | 35.0 | 50.0 | 10.0 | 15.125 | O | 69 |
| A12842 | 4.0 | 36.0 | 50.0 | 10.0 | 14.724 | O | 69 |
| A12843 | 3.0 | 37.0 | 50.0 | 10.0 | 14.306 | O | 69 |
| A12844 | 2.0 | 38.0 | 50.0 | 10.0 | 13.888 | O | 69 |
| A12845 | 1.0 | 39.0 | 50.0 | 10.0 | 13.470 | O | 69 |
| A12846 | 0.0 | 40.0 | 50.0 | 10.0 | 13.052 | O | 69 |
| A12847 | 15.0 | 15.0 | 60.0 | 10.0 | 19.253 | X | 69 |
| A12848 | 14.3 | 15.7 | 60.0 | 10.0 | 19.004 | X | 69 |
| A12849 | 14.2 | 15.8 | 60.0 | 10.0 | 18.968 | O | 69 |
| A12850 | 14.0 | 16.0 | 60.0 | 10.0 | 18.897 | O | 69 |
| A12851 | 10.0 | 20.0 | 60.0 | 10.0 | 17.469 | O | 69 |
| A12852 | 9.0 | 21.0 | 60.0 | 10.0 | 17.113 | O | 69 |
| A12853 | 8.0 | 22.0 | 60.0 | 10.0 | 16.756 | O | 69 |
| A12854 | 7.0 | 23.0 | 60.0 | 10.0 | 16.399 | O | 69 |
| A12855 | 6.0 | 24.0 | 60.0 | 10.0 | 16.042 | O | 69 |
| A12856 | 5.0 | 25.0 | 60.0 | 10.0 | 15.685 | O | 69 |
| A12857 | 4.0 | 26.0 | 60.0 | 10.0 | 15.329 | O | 69 |
| A12858 | 3.0 | 27.0 | 60.0 | 10.0 | 14.938 | O | 69 |
| A12859 | 2.0 | 28.0 | 60.0 | 10.0 | 14.520 | O | 69 |
| A12860 | 1.0 | 29.0 | 60.0 | 10.0 | 14.102 | O | 69 |
| A12861 | 0.0 | 30.0 | 60.0 | 10.0 | 13.684 | O | 69 |
| A12862 | 13.0 | 7.0 | 70.0 | 10.0 | 19.100 | X | 69 |
| A12863 | 12.8 | 7.2 | 70.0 | 10.0 | 19.028 | X | 69 |
| A12864 | 12.7 | 7.3 | 70.0 | 10.0 | 18.993 | O | 69 |
| A12865 | 12.0 | 8.0 | 70.0 | 10.0 | 18.743 | O | 69 |
| A12866 | 10.0 | 10.0 | 70.0 | 10.0 | 18.029 | O | 69 |
| A12867 | 9.0 | 11.0 | 70.0 | 10.0 | 17.672 | O | 69 |
| A12868 | 8.0 | 12.0 | 70.0 | 10.0 | 17.316 | O | 69 |
| A12869 | 7.0 | 13.0 | 70.0 | 10.0 | 16.959 | O | 69 |
| A12870 | 6.0 | 14.0 | 70.0 | 10.0 | 16.602 | O | 69 |
| A12871 | 5.0 | 15.0 | 70.0 | 10.0 | 16.245 | O | 69 |
| A12872 | 4.0 | 16.0 | 70.0 | 10.0 | 15.888 | O | 69 |

[Table 475]

EP 4 442 787 A1

| | | | | | | | |
|---|---|---|---|---|---|---|---|
| A12873 | 3.0 | 17.0 | 70.0 | 10.0 | 15.532 | O | 69 |
| A12874 | 2.0 | 18.0 | 70.0 | 10.0 | 15.152 | O | 69 |
| A12875 | 1.0 | 19.0 | 70.0 | 10.0 | 14.734 | O | 69 |
| A12876 | 0.0 | 20.0 | 70.0 | 10.0 | 14.316 | O | 69 |
| A12877 | 23.0 | 52.0 | 10.0 | 15.0 | 19.254 | X | 102 |
| A12878 | 22.3 | 52.7 | 10.0 | 15.0 | 19.004 | X | 102 |
| A12879 | 22.2 | 52.8 | 10.0 | 15.0 | 18.968 | O | 102 |
| A12880 | 22.0 | 53.0 | 10.0 | 15.0 | 18.897 | O | 102 |
| A12881 | 20.0 | 55.0 | 10.0 | 15.0 | 18.183 | O | 102 |
| A12882 | 15.0 | 60.0 | 10.0 | 15.0 | 16.399 | O | 102 |
| A12883 | 10.0 | 65.0 | 10.0 | 15.0 | 14.615 | O | 102 |
| A12884 | 9.0 | 66.0 | 10.0 | 15.0 | 14.258 | O | 102 |
| A12885 | 8.0 | 67.0 | 10.0 | 15.0 | 13.847 | O | 102 |
| A12886 | 7.0 | 68.0 | 10.0 | 15.0 | 13.429 | O | 102 |
| A12887 | 6.0 | 69.0 | 10.0 | 15.0 | 13.011 | O | 102 |
| A12888 | 5.0 | 70.0 | 10.0 | 15.0 | 12.593 | O | 102 |
| A12889 | 4.0 | 71.0 | 10.0 | 15.0 | 12.176 | O | 102 |
| A12890 | 3.0 | 72.0 | 10.0 | 15.0 | 11.758 | O | 102 |
| A12891 | 2.0 | 73.0 | 10.0 | 15.0 | 11.340 | O | 102 |
| A12892 | 1.0 | 74.0 | 10.0 | 15.0 | 10.922 | O | 102 |
| A12893 | 0.0 | 75.0 | 10.0 | 15.0 | 10.504 | O | 102 |
| A12894 | 21.0 | 44.0 | 20.0 | 15.0 | 19.100 | X | 102 |
| A12895 | 20.8 | 44.2 | 20.0 | 15.0 | 19.028 | X | 102 |
| A12896 | 20.7 | 44.3 | 20.0 | 15.0 | 18.993 | O | 102 |
| A12897 | 20.0 | 45.0 | 20.0 | 15.0 | 18.743 | O | 102 |
| A12898 | 15.0 | 50.0 | 20.0 | 15.0 | 16.959 | O | 102 |
| A12899 | 10.0 | 55.0 | 20.0 | 15.0 | 15.175 | O | 102 |
| A12900 | 9.0 | 56.0 | 20.0 | 15.0 | 14.818 | O | 102 |
| A12901 | 8.0 | 57.0 | 20.0 | 15.0 | 14.461 | O | 102 |
| A12902 | 7.0 | 58.0 | 20.0 | 15.0 | 14.062 | O | 102 |
| A12903 | 6.0 | 59.0 | 20.0 | 15.0 | 13.644 | O | 102 |
| A12904 | 5.0 | 60.0 | 20.0 | 15.0 | 13.226 | O | 102 |
| A12905 | 4.0 | 61.0 | 20.0 | 15.0 | 12.808 | O | 102 |
| A12906 | 3.0 | 62.0 | 20.0 | 15.0 | 12.390 | O | 102 |
| A12907 | 2.0 | 63.0 | 20.0 | 15.0 | 11.972 | O | 102 |
| A12908 | 1.0 | 64.0 | 20.0 | 15.0 | 11.554 | O | 102 |
| A12909 | 0.0 | 65.0 | 20.0 | 15.0 | 11.136 | O | 102 |
| A12910 | 20.0 | 35.0 | 30.0 | 15.0 | 19.303 | X | 102 |
| A12911 | 19.2 | 35.8 | 30.0 | 15.0 | 19.017 | X | 102 |
| A12912 | 19.1 | 35.9 | 30.0 | 15.0 | 18.982 | O | 102 |
| A12913 | 19.0 | 36.0 | 30.0 | 15.0 | 18.946 | O | 102 |
| A12914 | 15.0 | 40.0 | 30.0 | 15.0 | 17.519 | O | 102 |
| A12915 | 10.0 | 45.0 | 30.0 | 15.0 | 15.735 | O | 102 |
| A12916 | 9.0 | 46.0 | 30.0 | 15.0 | 15.378 | O | 102 |
| A12917 | 8.0 | 47.0 | 30.0 | 15.0 | 15.021 | O | 102 |
| A12918 | 7.0 | 48.0 | 30.0 | 15.0 | 14.664 | O | 102 |
| A12919 | 6.0 | 49.0 | 30.0 | 15.0 | 14.276 | O | 102 |
| A12920 | 5.0 | 50.0 | 30.0 | 15.0 | 13.858 | O | 102 |
| A12921 | 4.0 | 51.0 | 30.0 | 15.0 | 13.440 | O | 102 |
| A12922 | 3.0 | 52.0 | 30.0 | 15.0 | 13.022 | O | 102 |

[Table 476]

495

| | | | | | | | |
|---|---|---|---|---|---|---|---|
| A12923 | 2.0 | 53.0 | 30.0 | 15.0 | 12.604 | O | 102 |
| A12924 | 1.0 | 54.0 | 30.0 | 15.0 | 12.186 | O | 102 |
| A12925 | 0.0 | 55.0 | 30.0 | 15.0 | 11.768 | O | 102 |
| A12926 | 18.0 | 27.0 | 40.0 | 15.0 | 19.149 | X | 102 |
| A12927 | 17.6 | 27.4 | 40.0 | 15.0 | 19.006 | X | 102 |
| A12928 | 17.5 | 27.5 | 40.0 | 15.0 | 18.971 | O | 102 |
| A12929 | 17.0 | 28.0 | 40.0 | 15.0 | 18.792 | O | 102 |
| A12930 | 15.0 | 30.0 | 40.0 | 15.0 | 18.079 | O | 102 |
| A12931 | 10.0 | 35.0 | 40.0 | 15.0 | 16.294 | O | 102 |
| A12932 | 9.0 | 36.0 | 40.0 | 15.0 | 15.938 | O | 102 |
| A12933 | 8.0 | 37.0 | 40.0 | 15.0 | 15.581 | O | 102 |
| A12934 | 7.0 | 38.0 | 40.0 | 15.0 | 15.224 | O | 102 |
| A12935 | 6.0 | 39.0 | 40.0 | 15.0 | 14.867 | O | 102 |
| A12936 | 5.0 | 40.0 | 40.0 | 15.0 | 14.490 | O | 102 |
| A12937 | 4.0 | 41.0 | 40.0 | 15.0 | 14.072 | O | 102 |
| A12938 | 3.0 | 42.0 | 40.0 | 15.0 | 13.654 | O | 102 |
| A12939 | 2.0 | 43.0 | 40.0 | 15.0 | 13.236 | O | 102 |
| A12940 | 1.0 | 44.0 | 40.0 | 15.0 | 12.818 | O | 102 |
| A12941 | 0.0 | 45.0 | 40.0 | 15.0 | 12.401 | O | 102 |
| A12942 | 17.0 | 18.0 | 50.0 | 15.0 | 19.352 | X | 102 |
| A12943 | 16.1 | 18.9 | 50.0 | 15.0 | 19.031 | X | 102 |
| A12944 | 16.0 | 19.0 | 50.0 | 15.0 | 18.995 | O | 102 |
| A12945 | 10.0 | 25.0 | 50.0 | 15.0 | 16.854 | O | 102 |
| A12946 | 9.0 | 26.0 | 50.0 | 15.0 | 16.497 | O | 102 |
| A12947 | 8.0 | 27.0 | 50.0 | 15.0 | 16.141 | O | 102 |
| A12948 | 7.0 | 28.0 | 50.0 | 15.0 | 15.784 | O | 102 |
| A12949 | 6.0 | 29.0 | 50.0 | 15.0 | 15.427 | O | 102 |
| A12950 | 5.0 | 30.0 | 50.0 | 15.0 | 15.070 | O | 102 |
| A12951 | 4.0 | 31.0 | 50.0 | 15.0 | 14.704 | O | 102 |
| A12952 | 3.0 | 32.0 | 50.0 | 15.0 | 14.287 | O | 102 |
| A12953 | 2.0 | 33.0 | 50.0 | 15.0 | 13.869 | O | 102 |
| A12954 | 1.0 | 34.0 | 50.0 | 15.0 | 13.451 | O | 102 |
| A12955 | 0.0 | 35.0 | 50.0 | 15.0 | 13.033 | O | 102 |
| A12956 | 15.0 | 10.0 | 60.0 | 15.0 | 19.198 | X | 102 |
| A12957 | 14.5 | 10.5 | 60.0 | 15.0 | 19.020 | X | 102 |
| A12958 | 14.4 | 10.6 | 60.0 | 15.0 | 18.984 | O | 102 |
| A12959 | 14.0 | 11.0 | 60.0 | 15.0 | 18.841 | O | 102 |
| A12960 | 10.0 | 15.0 | 60.0 | 15.0 | 17.414 | O | 102 |
| A12961 | 9.0 | 16.0 | 60.0 | 15.0 | 17.057 | O | 102 |
| A12962 | 8.0 | 17.0 | 60.0 | 15.0 | 16.701 | O | 102 |
| A12963 | 7.0 | 18.0 | 60.0 | 15.0 | 16.344 | O | 102 |
| A12964 | 6.0 | 19.0 | 60.0 | 15.0 | 15.987 | O | 102 |
| A12965 | 5.0 | 20.0 | 60.0 | 15.0 | 15.630 | O | 102 |
| A12966 | 4.0 | 21.0 | 60.0 | 15.0 | 15.273 | O | 102 |
| A12967 | 3.0 | 22.0 | 60.0 | 15.0 | 14.916 | O | 102 |
| A12968 | 2.0 | 23.0 | 60.0 | 15.0 | 14.501 | O | 102 |
| A12969 | 1.0 | 24.0 | 60.0 | 15.0 | 14.083 | O | 102 |
| A12970 | 0.0 | 25.0 | 60.0 | 15.0 | 13.665 | O | 102 |
| A12971 | 13.0 | 2.0 | 70.0 | 15.0 | 19.044 | X | 102 |
| A12972 | 12.9 | 2.1 | 70.0 | 15.0 | 19.009 | X | 102 |

[Table 477]

| A12973 | 12.8 | 2.2 | 70.0 | 15.0 | 18.973 | O | 102 |
|---|---|---|---|---|---|---|---|
| A12974 | 12.0 | 3.0 | 70.0 | 15.0 | 18.688 | O | 102 |
| A12975 | 10.0 | 5.0 | 70.0 | 15.0 | 17.974 | O | 102 |
| A12976 | 9.0 | 6.0 | 70.0 | 15.0 | 17.617 | O | 102 |
| A12977 | 8.0 | 7.0 | 70.0 | 15.0 | 17.260 | O | 102 |
| A12978 | 7.0 | 8.0 | 70.0 | 15.0 | 16.904 | O | 102 |
| A12979 | 6.0 | 9.0 | 70.0 | 15.0 | 16.547 | O | 102 |
| A12980 | 5.0 | 10.0 | 70.0 | 15.0 | 16.190 | O | 102 |
| A12981 | 4.0 | 11.0 | 70.0 | 15.0 | 15.833 | O | 102 |
| A12982 | 3.0 | 12.0 | 70.0 | 15.0 | 15.476 | O | 102 |
| A12983 | 2.0 | 13.0 | 70.0 | 15.0 | 15.119 | O | 102 |
| A12984 | 1.0 | 14.0 | 70.0 | 15.0 | 14.715 | O | 102 |
| A12985 | 0.0 | 15.0 | 70.0 | 15.0 | 14.297 | O | 102 |
| A12986 | 23.0 | 47.0 | 10.0 | 20.0 | 19.198 | X | 136 |
| A12987 | 22.5 | 47.5 | 10.0 | 20.0 | 19.020 | X | 136 |
| A12988 | 22.4 | 47.6 | 10.0 | 20.0 | 18.984 | O | 136 |
| A12989 | 22.0 | 48.0 | 10.0 | 20.0 | 18.841 | O | 136 |
| A12990 | 20.0 | 50.0 | 10.0 | 20.0 | 18.128 | O | 136 |
| A12991 | 15.0 | 55.0 | 10.0 | 20.0 | 16.344 | O | 136 |
| A12992 | 10.0 | 60.0 | 10.0 | 20.0 | 14.560 | O | 136 |
| A12993 | 9.0 | 61.0 | 10.0 | 20.0 | 14.203 | O | 136 |
| A12994 | 8.0 | 62.0 | 10.0 | 20.0 | 13.828 | O | 136 |
| A12995 | 7.0 | 63.0 | 10.0 | 20.0 | 13.410 | O | 136 |
| A12996 | 6.0 | 64.0 | 10.0 | 20.0 | 12.992 | O | 136 |
| A12997 | 5.0 | 65.0 | 10.0 | 20.0 | 12.574 | O | 136 |
| A12998 | 4.0 | 66.0 | 10.0 | 20.0 | 12.156 | O | 136 |
| A12999 | 3.0 | 67.0 | 10.0 | 20.0 | 11.739 | O | 136 |
| A13000 | 2.0 | 68.0 | 10.0 | 20.0 | 11.321 | O | 136 |
| A13001 | 1.0 | 69.0 | 10.0 | 20.0 | 10.903 | O | 136 |
| A13002 | 0.0 | 70.0 | 10.0 | 20.0 | 10.485 | O | 136 |
| A13003 | 21.0 | 39.0 | 20.0 | 20.0 | 19.044 | X | 136 |
| A13004 | 20.9 | 39.1 | 20.0 | 20.0 | 19.009 | X | 136 |
| A13005 | 20.8 | 39.2 | 20.0 | 20.0 | 18.973 | O | 136 |
| A13006 | 20.0 | 40.0 | 20.0 | 20.0 | 18.688 | O | 136 |
| A13007 | 15.0 | 45.0 | 20.0 | 20.0 | 16.904 | O | 136 |
| A13008 | 10.0 | 50.0 | 20.0 | 20.0 | 15.120 | O | 136 |
| A13009 | 9.0 | 51.0 | 20.0 | 20.0 | 14.763 | O | 136 |
| A13010 | 8.0 | 52.0 | 20.0 | 20.0 | 14.406 | O | 136 |
| A13011 | 7.0 | 53.0 | 20.0 | 20.0 | 14.042 | O | 136 |
| A13012 | 6.0 | 54.0 | 20.0 | 20.0 | 13.625 | O | 136 |
| A13013 | 5.0 | 55.0 | 20.0 | 20.0 | 13.207 | O | 136 |
| A13014 | 4.0 | 56.0 | 20.0 | 20.0 | 12.789 | O | 136 |
| A13015 | 3.0 | 57.0 | 20.0 | 20.0 | 12.371 | O | 136 |
| A13016 | 2.0 | 58.0 | 20.0 | 20.0 | 11.953 | O | 136 |
| A13017 | 1.0 | 59.0 | 20.0 | 20.0 | 11.535 | O | 136 |
| A13018 | 0.0 | 60.0 | 20.0 | 20.0 | 11.117 | O | 136 |
| A13019 | 20.0 | 30.0 | 30.0 | 20.0 | 19.248 | X | 136 |
| A13020 | 19.4 | 30.6 | 30.0 | 20.0 | 19.033 | X | 136 |
| A13021 | 19.3 | 30.7 | 30.0 | 20.0 | 18.998 | O | 136 |
| A13022 | 19.0 | 31.0 | 30.0 | 20.0 | 18.891 | O | 136 |

[Table 478]

| A13023 | 15.0 | 35.0 | 30.0 | 20.0 | 17.463 | O | 136 |
|--------|------|------|------|------|--------|---|-----|
| A13024 | 10.0 | 40.0 | 30.0 | 20.0 | 15.679 | O | 136 |
| A13025 | 9.0 | 41.0 | 30.0 | 20.0 | 15.323 | O | 136 |
| A13026 | 8.0 | 42.0 | 30.0 | 20.0 | 14.966 | O | 136 |
| A13027 | 7.0 | 43.0 | 30.0 | 20.0 | 14.609 | O | 136 |
| A13028 | 6.0 | 44.0 | 30.0 | 20.0 | 14.252 | O | 136 |
| A13029 | 5.0 | 45.0 | 30.0 | 20.0 | 13.839 | O | 136 |
| A13030 | 4.0 | 46.0 | 30.0 | 20.0 | 13.421 | O | 136 |
| A13031 | 3.0 | 47.0 | 30.0 | 20.0 | 13.003 | O | 136 |
| A13032 | 2.0 | 48.0 | 30.0 | 20.0 | 12.585 | O | 136 |
| A13033 | 1.0 | 49.0 | 30.0 | 20.0 | 12.167 | O | 136 |
| A13034 | 0.0 | 50.0 | 30.0 | 20.0 | 11.749 | O | 136 |
| A13035 | 18.0 | 22.0 | 40.0 | 20.0 | 19.094 | X | 136 |
| A13036 | 17.8 | 22.2 | 40.0 | 20.0 | 19.022 | X | 136 |
| A13037 | 17.7 | 22.3 | 40.0 | 20.0 | 18.987 | O | 136 |
| A13038 | 17.0 | 23.0 | 40.0 | 20.0 | 18.737 | O | 136 |
| A13039 | 15.0 | 25.0 | 40.0 | 20.0 | 18.023 | O | 136 |
| A13040 | 10.0 | 30.0 | 40.0 | 20.0 | 16.239 | O | 136 |
| A13041 | 9.0 | 31.0 | 40.0 | 20.0 | 15.882 | O | 136 |
| A13042 | 8.0 | 32.0 | 40.0 | 20.0 | 15.526 | O | 136 |
| A13043 | 7.0 | 33.0 | 40.0 | 20.0 | 15.169 | O | 136 |
| A13044 | 6.0 | 34.0 | 40.0 | 20.0 | 14.812 | O | 136 |
| A13045 | 5.0 | 35.0 | 40.0 | 20.0 | 14.455 | O | 136 |
| A13046 | 4.0 | 36.0 | 40.0 | 20.0 | 14.053 | O | 136 |
| A13047 | 3.0 | 37.0 | 40.0 | 20.0 | 13.635 | O | 136 |
| A13048 | 2.0 | 38.0 | 40.0 | 20.0 | 13.217 | O | 136 |
| A13049 | 1.0 | 39.0 | 40.0 | 20.0 | 12.799 | O | 136 |
| A13050 | 0.0 | 40.0 | 40.0 | 20.0 | 12.381 | O | 136 |
| A13051 | 17.0 | 13.0 | 50.0 | 20.0 | 19.297 | X | 136 |
| A13052 | 16.2 | 13.8 | 50.0 | 20.0 | 19.011 | X | 136 |
| A13053 | 16.1 | 13.9 | 50.0 | 20.0 | 18.976 | O | 136 |
| A13054 | 16.0 | 14.0 | 50.0 | 20.0 | 18.940 | O | 136 |
| A13055 | 15.0 | 15.0 | 50.0 | 20.0 | 18.583 | O | 136 |
| A13056 | 10.0 | 20.0 | 50.0 | 20.0 | 16.799 | O | 136 |
| A13057 | 9.0 | 21.0 | 50.0 | 20.0 | 16.442 | O | 136 |
| A13058 | 8.0 | 22.0 | 50.0 | 20.0 | 16.085 | O | 136 |
| A13059 | 7.0 | 23.0 | 50.0 | 20.0 | 15.729 | O | 136 |
| A13060 | 6.0 | 24.0 | 50.0 | 20.0 | 15.372 | O | 136 |
| A13061 | 5.0 | 25.0 | 50.0 | 20.0 | 15.015 | O | 136 |
| A13062 | 4.0 | 26.0 | 50.0 | 20.0 | 14.658 | O | 136 |
| A13063 | 3.0 | 27.0 | 50.0 | 20.0 | 14.267 | O | 136 |
| A13064 | 2.0 | 28.0 | 50.0 | 20.0 | 13.850 | O | 136 |
| A13065 | 1.0 | 29.0 | 50.0 | 20.0 | 13.432 | O | 136 |
| A13066 | 0.0 | 30.0 | 50.0 | 20.0 | 13.014 | O | 136 |
| A13067 | 15.0 | 5.0 | 60.0 | 20.0 | 19.143 | X | 136 |
| A13068 | 14.6 | 5.4 | 60.0 | 20.0 | 19.000 | X | 136 |
| A13069 | 14.5 | 5.5 | 60.0 | 20.0 | 18.965 | O | 136 |
| A13070 | 14.0 | 6.0 | 60.0 | 20.0 | 18.786 | O | 136 |
| A13071 | 10.0 | 10.0 | 60.0 | 20.0 | 17.359 | O | 136 |
| A13072 | 9.0 | 11.0 | 60.0 | 20.0 | 17.002 | O | 136 |

[Table 479]

| A13073 | 8.0 | 12.0 | 60.0 | 20.0 | 16.645 | O | 136 |
|---|---|---|---|---|---|---|---|
| A13074 | 7.0 | 13.0 | 60.0 | 20.0 | 16.288 | O | 136 |
| A13075 | 6.0 | 14.0 | 60.0 | 20.0 | 15.932 | O | 136 |
| A13076 | 5.0 | 15.0 | 60.0 | 20.0 | 15.575 | O | 136 |
| A13077 | 4.0 | 16.0 | 60.0 | 20.0 | 15.218 | O | 136 |
| A13078 | 3.0 | 17.0 | 60.0 | 20.0 | 14.861 | O | 136 |
| A13079 | 2.0 | 18.0 | 60.0 | 20.0 | 14.482 | O | 136 |
| A13080 | 1.0 | 19.0 | 60.0 | 20.0 | 14.064 | O | 136 |
| A13081 | 0.0 | 20.0 | 60.0 | 20.0 | 13.646 | O | 136 |
| A13082 | 23.0 | 45.0 | 10.0 | 22.0 | 19.176 | X | 150 |
| A13083 | 22.6 | 45.4 | 10.0 | 22.0 | 19.033 | X | 150 |
| A13084 | 22.5 | 45.5 | 10.0 | 22.0 | 18.998 | O | 150 |
| A13085 | 22.0 | 46.0 | 10.0 | 22.0 | 18.819 | O | 150 |
| A13086 | 20.0 | 48.0 | 10.0 | 22.0 | 18.106 | O | 150 |
| A13087 | 15.0 | 53.0 | 10.0 | 22.0 | 16.322 | O | 150 |
| A13088 | 10.0 | 58.0 | 10.0 | 22.0 | 14.538 | O | 150 |
| A13089 | 9.0 | 59.0 | 10.0 | 22.0 | 14.181 | O | 150 |
| A13090 | 8.0 | 60.0 | 10.0 | 22.0 | 13.821 | O | 150 |
| A13091 | 7.0 | 61.0 | 10.0 | 22.0 | 13.403 | O | 150 |
| A13092 | 6.0 | 62.0 | 10.0 | 22.0 | 12.985 | O | 150 |
| A13093 | 5.0 | 63.0 | 10.0 | 22.0 | 12.567 | O | 150 |
| A13094 | 4.0 | 64.0 | 10.0 | 22.0 | 12.149 | O | 150 |
| A13095 | 3.0 | 65.0 | 10.0 | 22.0 | 11.731 | O | 150 |
| A13096 | 2.0 | 66.0 | 10.0 | 22.0 | 11.313 | O | 150 |
| A13097 | 1.0 | 67.0 | 10.0 | 22.0 | 10.895 | O | 150 |
| A13098 | 0.0 | 68.0 | 10.0 | 22.0 | 10.477 | O | 150 |
| A13099 | 21.0 | 37.0 | 20.0 | 22.0 | 19.022 | X | 150 |
| A13100 | 20.9 | 37.1 | 20.0 | 22.0 | 18.987 | O | 150 |
| A13101 | 20.0 | 38.0 | 20.0 | 22.0 | 18.666 | O | 150 |
| A13102 | 15.0 | 43.0 | 20.0 | 22.0 | 16.882 | O | 150 |
| A13103 | 10.0 | 48.0 | 20.0 | 22.0 | 15.097 | O | 150 |
| A13104 | 9.0 | 49.0 | 20.0 | 22.0 | 14.741 | O | 150 |
| A13105 | 8.0 | 50.0 | 20.0 | 22.0 | 14.384 | O | 150 |
| A13106 | 7.0 | 51.0 | 20.0 | 22.0 | 14.027 | O | 150 |
| A13107 | 6.0 | 52.0 | 20.0 | 22.0 | 13.617 | O | 150 |
| A13108 | 5.0 | 53.0 | 20.0 | 22.0 | 13.199 | O | 150 |
| A13109 | 4.0 | 54.0 | 20.0 | 22.0 | 12.781 | O | 150 |
| A13110 | 3.0 | 55.0 | 20.0 | 22.0 | 12.363 | O | 150 |
| A13111 | 2.0 | 56.0 | 20.0 | 22.0 | 11.945 | O | 150 |
| A13112 | 1.0 | 57.0 | 20.0 | 22.0 | 11.527 | O | 150 |
| A13113 | 0.0 | 58.0 | 20.0 | 22.0 | 11.109 | O | 150 |
| A13114 | 20.0 | 28.0 | 30.0 | 22.0 | 19.225 | X | 150 |
| A13115 | 19.4 | 28.6 | 30.0 | 22.0 | 19.011 | X | 150 |
| A13116 | 19.3 | 28.7 | 30.0 | 22.0 | 18.976 | O | 150 |
| A13117 | 19.0 | 29.0 | 30.0 | 22.0 | 18.869 | O | 150 |
| A13118 | 15.0 | 33.0 | 30.0 | 22.0 | 17.441 | O | 150 |
| A13119 | 10.0 | 38.0 | 30.0 | 22.0 | 15.657 | O | 150 |
| A13120 | 9.0 | 39.0 | 30.0 | 22.0 | 15.300 | O | 150 |
| A13121 | 8.0 | 40.0 | 30.0 | 22.0 | 14.944 | O | 150 |
| A13122 | 7.0 | 41.0 | 30.0 | 22.0 | 14.587 | O | 150 |

[Table 480]

| | | | | | | | |
|---|---|---|---|---|---|---|---|
| A13123 | 6.0 | 42.0 | 30.0 | 22.0 | 14.230 | O | 150 |
| A13124 | 5.0 | 43.0 | 30.0 | 22.0 | 13.831 | O | 150 |
| A13125 | 4.0 | 44.0 | 30.0 | 22.0 | 13.413 | O | 150 |
| A13126 | 3.0 | 45.0 | 30.0 | 22.0 | 12.995 | O | 150 |
| A13127 | 2.0 | 46.0 | 30.0 | 22.0 | 12.577 | O | 150 |
| A13128 | 1.0 | 47.0 | 30.0 | 22.0 | 12.160 | O | 150 |
| A13129 | 0.0 | 48.0 | 30.0 | 22.0 | 11.742 | O | 150 |
| A13130 | 18.0 | 20.0 | 40.0 | 22.0 | 19.072 | X | 150 |
| A13131 | 17.8 | 20.2 | 40.0 | 22.0 | 19.000 | X | 150 |
| A13132 | 17.7 | 20.3 | 40.0 | 22.0 | 18.965 | O | 150 |
| A13133 | 17.0 | 21.0 | 40.0 | 22.0 | 18.715 | O | 150 |
| A13134 | 15.0 | 23.0 | 40.0 | 22.0 | 18.001 | O | 150 |
| A13135 | 10.0 | 28.0 | 40.0 | 22.0 | 16.217 | O | 150 |
| A13136 | 9.0 | 29.0 | 40.0 | 22.0 | 15.860 | O | 150 |
| A13137 | 8.0 | 30.0 | 40.0 | 22.0 | 15.503 | O | 150 |
| A13138 | 7.0 | 31.0 | 40.0 | 22.0 | 15.147 | O | 150 |
| A13139 | 6.0 | 32.0 | 40.0 | 22.0 | 14.790 | O | 150 |
| A13140 | 5.0 | 33.0 | 40.0 | 22.0 | 14.433 | O | 150 |
| A13141 | 4.0 | 34.0 | 40.0 | 22.0 | 14.046 | O | 150 |
| A13142 | 3.0 | 35.0 | 40.0 | 22.0 | 13.628 | O | 150 |
| A13143 | 2.0 | 36.0 | 40.0 | 22.0 | 13.210 | O | 150 |
| A13144 | 1.0 | 37.0 | 40.0 | 22.0 | 12.792 | O | 150 |
| A13145 | 0.0 | 38.0 | 40.0 | 22.0 | 12.374 | O | 150 |
| A13146 | 17.0 | 11.0 | 50.0 | 22.0 | 19.275 | X | 150 |
| A13147 | 16.3 | 11.7 | 50.0 | 22.0 | 19.025 | X | 150 |
| A13148 | 16.2 | 11.8 | 50.0 | 22.0 | 18.989 | O | 150 |
| A13149 | 16.0 | 12.0 | 50.0 | 22.0 | 18.918 | O | 150 |
| A13150 | 15.0 | 13.0 | 50.0 | 22.0 | 18.561 | O | 150 |
| A13151 | 10.0 | 18.0 | 50.0 | 22.0 | 16.777 | O | 150 |
| A13152 | 9.0 | 19.0 | 50.0 | 22.0 | 16.420 | O | 150 |
| A13153 | 8.0 | 20.0 | 50.0 | 22.0 | 16.063 | O | 150 |
| A13154 | 7.0 | 21.0 | 50.0 | 22.0 | 15.707 | O | 150 |
| A13155 | 6.0 | 22.0 | 50.0 | 22.0 | 15.350 | O | 150 |
| A13156 | 5.0 | 23.0 | 50.0 | 22.0 | 14.993 | O | 150 |
| A13157 | 4.0 | 24.0 | 50.0 | 22.0 | 14.636 | O | 150 |
| A13158 | 3.0 | 25.0 | 50.0 | 22.0 | 14.260 | O | 150 |
| A13159 | 2.0 | 26.0 | 50.0 | 22.0 | 13.842 | O | 150 |
| A13160 | 1.0 | 27.0 | 50.0 | 22.0 | 13.424 | O | 150 |
| A13161 | 0.0 | 28.0 | 50.0 | 22.0 | 13.006 | O | 150 |
| A13162 | 15.0 | 3.0 | 60.0 | 22.0 | 19.121 | X | 150 |
| A13163 | 14.7 | 3.3 | 60.0 | 22.0 | 19.014 | X | 150 |
| A13164 | 14.6 | 3.4 | 60.0 | 22.0 | 18.978 | O | 150 |
| A13165 | 14.0 | 4.0 | 60.0 | 22.0 | 18.764 | O | 150 |
| A13166 | 10.0 | 8.0 | 60.0 | 22.0 | 17.337 | O | 150 |
| A13167 | 9.0 | 9.0 | 60.0 | 22.0 | 16.980 | O | 150 |
| A13168 | 8.0 | 10.0 | 60.0 | 22.0 | 16.623 | O | 150 |
| A13169 | 7.0 | 11.0 | 60.0 | 22.0 | 16.266 | O | 150 |
| A13170 | 6.0 | 12.0 | 60.0 | 22.0 | 15.910 | O | 150 |
| A13171 | 5.0 | 13.0 | 60.0 | 22.0 | 15.553 | O | 150 |
| A13172 | 4.0 | 14.0 | 60.0 | 22.0 | 15.196 | O | 150 |
| A13173 | 3.0 | 15.0 | 60.0 | 22.0 | 14.839 | O | 150 |
| A13174 | 2.0 | 16.0 | 60.0 | 22.0 | 14.474 | O | 150 |
| A13175 | 1.0 | 17.0 | 60.0 | 22.0 | 14.056 | O | 150 |
| A13176 | 0.0 | 18.0 | 60.0 | 22.0 | 13.638 | O | 150 |

Tables 481 to 492 show the composition, combustion heat amount, and GWP of the working medium of a four-component system of propane, HFO-1123, HFO-1132(E), and $CO_2$.

[Table 481]

| Case | propane | HFO-1123 | HFO-1132(E) | $CO_2$ | Heat of Combustion | Evaluation | GWP |
|---|---|---|---|---|---|---|---|
| A13177 | 23.0 | 65.0 | 10.0 | 2.0 | 19.206 | X | 1 |
| A13178 | 22.5 | 65.5 | 10.0 | 2.0 | 19.028 | X | 1 |
| A13179 | 22.4 | 65.6 | 10.0 | 2.0 | 18.992 | O | 1 |
| A13180 | 22.0 | 66.0 | 10.0 | 2.0 | 18.849 | O | 1 |
| A13181 | 20.0 | 68.0 | 10.0 | 2.0 | 18.136 | O | 1 |
| A13182 | 15.0 | 73.0 | 10.0 | 2.0 | 16.352 | O | 1 |
| A13183 | 10.0 | 78.0 | 10.0 | 2.0 | 14.542 | O | 1 |
| A13184 | 9.0 | 79.0 | 10.0 | 2.0 | 14.124 | O | 1 |
| A13185 | 8.0 | 80.0 | 10.0 | 2.0 | 13.706 | O | 1 |
| A13186 | 7.0 | 81.0 | 10.0 | 2.0 | 13.288 | O | 1 |
| A13187 | 6.0 | 82.0 | 10.0 | 2.0 | 12.870 | O | 1 |
| A13188 | 5.0 | 83.0 | 10.0 | 2.0 | 12.452 | O | 1 |
| A13189 | 4.0 | 84.0 | 10.0 | 2.0 | 12.034 | O | 1 |
| A13190 | 3.0 | 85.0 | 10.0 | 2.0 | 11.616 | O | 1 |
| A13191 | 2.0 | 86.0 | 10.0 | 2.0 | 11.198 | O | 1 |
| A13192 | 1.0 | 87.0 | 10.0 | 2.0 | 10.780 | O | 1 |
| A13193 | 0.0 | 88.0 | 10.0 | 2.0 | 10.362 | O | 1 |
| A13194 | 21.0 | 57.0 | 20.0 | 2.0 | 19.052 | X | 1 |
| A13195 | 20.9 | 57.1 | 20.0 | 2.0 | 19.017 | X | 1 |
| A13196 | 20.8 | 57.2 | 20.0 | 2.0 | 18.981 | O | 1 |
| A13197 | 20.0 | 58.0 | 20.0 | 2.0 | 18.696 | O | 1 |
| A13198 | 15.0 | 63.0 | 20.0 | 2.0 | 16.912 | O | 1 |
| A13199 | 10.0 | 68.0 | 20.0 | 2.0 | 15.127 | O | 1 |
| A13200 | 9.0 | 69.0 | 20.0 | 2.0 | 14.756 | O | 1 |
| A13201 | 8.0 | 70.0 | 20.0 | 2.0 | 14.338 | O | 1 |
| A13202 | 7.0 | 71.0 | 20.0 | 2.0 | 13.920 | O | 1 |
| A13203 | 6.0 | 72.0 | 20.0 | 2.0 | 13.502 | O | 1 |
| A13204 | 5.0 | 73.0 | 20.0 | 2.0 | 13.084 | O | 1 |
| A13205 | 4.0 | 74.0 | 20.0 | 2.0 | 12.666 | O | 1 |
| A13206 | 3.0 | 75.0 | 20.0 | 2.0 | 12.248 | O | 1 |
| A13207 | 2.0 | 76.0 | 20.0 | 2.0 | 11.831 | O | 1 |
| A13208 | 1.0 | 77.0 | 20.0 | 2.0 | 11.413 | O | 1 |
| A13209 | 0.0 | 78.0 | 20.0 | 2.0 | 10.995 | O | 1 |
| A13210 | 20.0 | 48.0 | 30.0 | 2.0 | 19.255 | X | 1 |
| A13211 | 19.3 | 48.7 | 30.0 | 2.0 | 19.006 | X | 1 |
| A13212 | 19.2 | 48.8 | 30.0 | 2.0 | 18.970 | O | 1 |
| A13213 | 19.0 | 49.0 | 30.0 | 2.0 | 18.899 | O | 1 |
| A13214 | 15.0 | 53.0 | 30.0 | 2.0 | 17.471 | O | 1 |
| A13215 | 10.0 | 58.0 | 30.0 | 2.0 | 15.687 | O | 1 |
| A13216 | 9.0 | 59.0 | 30.0 | 2.0 | 15.331 | O | 1 |
| A13217 | 8.0 | 60.0 | 30.0 | 2.0 | 14.970 | O | 1 |
| A13218 | 7.0 | 61.0 | 30.0 | 2.0 | 14.552 | O | 1 |
| A13219 | 6.0 | 62.0 | 30.0 | 2.0 | 14.134 | O | 1 |
| A13220 | 5.0 | 63.0 | 30.0 | 2.0 | 13.717 | O | 1 |
| A13221 | 4.0 | 64.0 | 30.0 | 2.0 | 13.299 | O | 1 |
| A13222 | 3.0 | 65.0 | 30.0 | 2.0 | 12.881 | O | 1 |
| A13223 | 2.0 | 66.0 | 30.0 | 2.0 | 12.463 | O | 1 |
| A13224 | 1.0 | 67.0 | 30.0 | 2.0 | 12.045 | O | 1 |
| A13225 | 0.0 | 68.0 | 30.0 | 2.0 | 11.627 | O | 1 |
| A13226 | 18.0 | 40.0 | 40.0 | 2.0 | 19.102 | X | 1 |

[Table 482]

| | | | | | | | |
|---|---|---|---|---|---|---|---|
| A13227 | 17.8 | 40.2 | 40.0 | 2.0 | 19.030 | X | 1 |
| A13228 | 17.7 | 40.3 | 40.0 | 2.0 | 18.995 | O | 1 |
| A13229 | 17.0 | 41.0 | 40.0 | 2.0 | 18.745 | O | 1 |
| A13230 | 15.0 | 43.0 | 40.0 | 2.0 | 18.031 | O | 1 |
| A13231 | 10.0 | 48.0 | 40.0 | 2.0 | 16.247 | O | 1 |
| A13232 | 9.0 | 49.0 | 40.0 | 2.0 | 15.890 | O | 1 |
| A13233 | 8.0 | 50.0 | 40.0 | 2.0 | 15.534 | O | 1 |
| A13234 | 7.0 | 51.0 | 40.0 | 2.0 | 15.177 | O | 1 |
| A13235 | 6.0 | 52.0 | 40.0 | 2.0 | 14.767 | O | 1 |
| A13236 | 5.0 | 53.0 | 40.0 | 2.0 | 14.349 | O | 1 |
| A13237 | 4.0 | 54.0 | 40.0 | 2.0 | 13.931 | O | 1 |
| A13238 | 3.0 | 55.0 | 40.0 | 2.0 | 13.513 | O | 1 |
| A13239 | 2.0 | 56.0 | 40.0 | 2.0 | 13.095 | O | 1 |
| A13240 | 1.0 | 57.0 | 40.0 | 2.0 | 12.677 | O | 1 |
| A13241 | 0.0 | 58.0 | 40.0 | 2.0 | 12.259 | O | 1 |
| A13242 | 17.0 | 31.0 | 50.0 | 2.0 | 19.305 | X | 1 |
| A13243 | 16.2 | 31.8 | 50.0 | 2.0 | 19.019 | X | 1 |
| A13244 | 16.1 | 31.9 | 50.0 | 2.0 | 18.984 | O | 1 |
| A13245 | 16.0 | 32.0 | 50.0 | 2.0 | 18.948 | O | 1 |
| A13246 | 15.0 | 33.0 | 50.0 | 2.0 | 18.591 | O | 1 |
| A13247 | 10.0 | 38.0 | 50.0 | 2.0 | 16.807 | O | 1 |
| A13248 | 9.0 | 39.0 | 50.0 | 2.0 | 16.450 | O | 1 |
| A13249 | 8.0 | 40.0 | 50.0 | 2.0 | 16.093 | O | 1 |
| A13250 | 7.0 | 41.0 | 50.0 | 2.0 | 15.737 | O | 1 |
| A13251 | 6.0 | 42.0 | 50.0 | 2.0 | 15.380 | O | 1 |
| A13252 | 5.0 | 43.0 | 50.0 | 2.0 | 14.981 | O | 1 |
| A13253 | 4.0 | 44.0 | 50.0 | 2.0 | 14.563 | O | 1 |
| A13254 | 3.0 | 45.0 | 50.0 | 2.0 | 14.145 | O | 1 |
| A13255 | 2.0 | 46.0 | 50.0 | 2.0 | 13.727 | O | 1 |
| A13256 | 1.0 | 47.0 | 50.0 | 2.0 | 13.309 | O | 1 |
| A13257 | 0.0 | 48.0 | 50.0 | 2.0 | 12.891 | O | 1 |
| A13258 | 15.0 | 23.0 | 60.0 | 2.0 | 19.151 | X | 1 |
| A13259 | 14.6 | 23.4 | 60.0 | 2.0 | 19.008 | X | 1 |
| A13260 | 14.5 | 23.5 | 60.0 | 2.0 | 18.972 | O | 1 |
| A13261 | 14.0 | 24.0 | 60.0 | 2.0 | 18.794 | O | 1 |
| A13262 | 10.0 | 28.0 | 60.0 | 2.0 | 17.367 | O | 1 |
| A13263 | 9.0 | 29.0 | 60.0 | 2.0 | 17.010 | O | 1 |
| A13264 | 8.0 | 30.0 | 60.0 | 2.0 | 16.653 | O | 1 |
| A13265 | 7.0 | 31.0 | 60.0 | 2.0 | 16.296 | O | 1 |
| A13266 | 6.0 | 32.0 | 60.0 | 2.0 | 15.940 | O | 1 |
| A13267 | 5.0 | 33.0 | 60.0 | 2.0 | 15.583 | O | 1 |
| A13268 | 4.0 | 34.0 | 60.0 | 2.0 | 15.195 | O | 1 |
| A13269 | 3.0 | 35.0 | 60.0 | 2.0 | 14.777 | O | 1 |
| A13270 | 2.0 | 36.0 | 60.0 | 2.0 | 14.359 | O | 1 |
| A13271 | 1.0 | 37.0 | 60.0 | 2.0 | 13.942 | O | 1 |
| A13272 | 0.0 | 38.0 | 60.0 | 2.0 | 13.524 | O | 1 |
| A13273 | 14.0 | 14.0 | 70.0 | 2.0 | 19.354 | X | 1 |
| A13274 | 13.1 | 14.9 | 70.0 | 2.0 | 19.033 | X | 1 |
| A13275 | 13.0 | 15.0 | 70.0 | 2.0 | 18.997 | O | 1 |
| A13276 | 10.0 | 18.0 | 70.0 | 2.0 | 17.927 | O | 1 |

[Table 483]

| A13277 | 9.0 | 19.0 | 70.0 | 2.0 | 17.570 | O | 1 |
|---|---|---|---|---|---|---|---|
| A13278 | 8.0 | 20.0 | 70.0 | 2.0 | 17.213 | O | 1 |
| A13279 | 7.0 | 21.0 | 70.0 | 2.0 | 16.856 | O | 1 |
| A13280 | 6.0 | 22.0 | 70.0 | 2.0 | 16.499 | O | 1 |
| A13281 | 5.0 | 23.0 | 70.0 | 2.0 | 16.143 | O | 1 |
| A13282 | 4.0 | 24.0 | 70.0 | 2.0 | 15.786 | O | 1 |
| A13283 | 3.0 | 25.0 | 70.0 | 2.0 | 15.410 | O | 1 |
| A13284 | 2.0 | 26.0 | 70.0 | 2.0 | 14.992 | O | 1 |
| A13285 | 1.0 | 27.0 | 70.0 | 2.0 | 14.574 | O | 1 |
| A13286 | 0.0 | 28.0 | 70.0 | 2.0 | 14.156 | O | 1 |
| A13287 | 12.0 | 6.0 | 80.0 | 2.0 | 19.200 | X | 1 |
| A13288 | 11.5 | 6.5 | 80.0 | 2.0 | 19.022 | X | 1 |
| A13289 | 11.4 | 6.6 | 80.0 | 2.0 | 18.986 | O | 1 |
| A13290 | 11.0 | 7.0 | 80.0 | 2.0 | 18.843 | O | 1 |
| A13291 | 10.0 | 8.0 | 80.0 | 2.0 | 18.487 | O | 1 |
| A13292 | 9.0 | 9.0 | 80.0 | 2.0 | 18.130 | O | 1 |
| A13293 | 8.0 | 10.0 | 80.0 | 2.0 | 17.773 | O | 1 |
| A13294 | 7.0 | 11.0 | 80.0 | 2.0 | 17.416 | O | 1 |
| A13295 | 6.0 | 12.0 | 80.0 | 2.0 | 17.059 | O | 1 |
| A13296 | 5.0 | 13.0 | 80.0 | 2.0 | 16.702 | O | 1 |
| A13297 | 4.0 | 14.0 | 80.0 | 2.0 | 16.346 | O | 1 |
| A13298 | 3.0 | 15.0 | 80.0 | 2.0 | 15.989 | O | 1 |
| A13299 | 2.0 | 16.0 | 80.0 | 2.0 | 15.624 | O | 1 |
| A13300 | 1.0 | 17.0 | 80.0 | 2.0 | 15.206 | O | 1 |
| A13301 | 0.0 | 18.0 | 80.0 | 2.0 | 14.788 | O | 1 |
| A13302 | 24.0 | 62.0 | 10.0 | 4.0 | 19.350 | X | 1 |
| A13303 | 23.1 | 62.9 | 10.0 | 4.0 | 19.029 | X | 1 |
| A13304 | 23.0 | 63.0 | 10.0 | 4.0 | 18.993 | O | 1 |
| A13305 | 20.0 | 66.0 | 10.0 | 4.0 | 17.923 | O | 1 |
| A13306 | 15.0 | 71.0 | 10.0 | 4.0 | 16.139 | O | 1 |
| A13307 | 10.0 | 76.0 | 10.0 | 4.0 | 14.343 | O | 1 |
| A13308 | 9.0 | 77.0 | 10.0 | 4.0 | 13.925 | O | 1 |
| A13309 | 8.0 | 78.0 | 10.0 | 4.0 | 13.507 | O | 1 |
| A13310 | 7.0 | 79.0 | 10.0 | 4.0 | 13.089 | O | 1 |
| A13311 | 6.0 | 80.0 | 10.0 | 4.0 | 12.671 | O | 1 |
| A13312 | 5.0 | 81.0 | 10.0 | 4.0 | 12.253 | O | 1 |
| A13313 | 4.0 | 82.0 | 10.0 | 4.0 | 11.836 | O | 1 |
| A13314 | 3.0 | 83.0 | 10.0 | 4.0 | 11.418 | O | 1 |
| A13315 | 2.0 | 84.0 | 10.0 | 4.0 | 11.000 | O | 1 |
| A13316 | 1.0 | 85.0 | 10.0 | 4.0 | 10.582 | O | 1 |
| A13317 | 0.0 | 86.0 | 10.0 | 4.0 | 10.164 | O | 1 |
| A13318 | 22.0 | 54.0 | 20.0 | 4.0 | 19.196 | X | 1 |
| A13319 | 21.5 | 54.5 | 20.0 | 4.0 | 19.018 | X | 1 |
| A13320 | 21.4 | 54.6 | 20.0 | 4.0 | 18.982 | O | 1 |
| A13321 | 21.0 | 55.0 | 20.0 | 4.0 | 18.839 | O | 1 |
| A13322 | 20.0 | 56.0 | 20.0 | 4.0 | 18.483 | O | 1 |
| A13323 | 15.0 | 61.0 | 20.0 | 4.0 | 16.699 | O | 1 |
| A13324 | 10.0 | 66.0 | 20.0 | 4.0 | 14.914 | O | 1 |
| A13325 | 9.0 | 67.0 | 20.0 | 4.0 | 14.557 | O | 1 |
| A13326 | 8.0 | 68.0 | 20.0 | 4.0 | 14.139 | O | 1 |

[Table 484]

| A13327 | 7.0 | 69.0 | 20.0 | 4.0 | 13.722 | O | 1 |
|--------|------|------|------|-----|--------|---|---|
| A13328 | 6.0 | 70.0 | 20.0 | 4.0 | 13.304 | O | 1 |
| A13329 | 5.0 | 71.0 | 20.0 | 4.0 | 12.886 | O | 1 |
| A13330 | 4.0 | 72.0 | 20.0 | 4.0 | 12.468 | O | 1 |
| A13331 | 3.0 | 73.0 | 20.0 | 4.0 | 12.050 | O | 1 |
| A13332 | 2.0 | 74.0 | 20.0 | 4.0 | 11.632 | O | 1 |
| A13333 | 1.0 | 75.0 | 20.0 | 4.0 | 11.214 | O | 1 |
| A13334 | 0.0 | 76.0 | 20.0 | 4.0 | 10.796 | O | 1 |
| A13335 | 20.0 | 46.0 | 30.0 | 4.0 | 19.042 | X | 1 |
| A13336 | 19.9 | 46.1 | 30.0 | 4.0 | 19.007 | X | 1 |
| A13337 | 19.8 | 46.2 | 30.0 | 4.0 | 18.971 | O | 1 |
| A13338 | 19.0 | 47.0 | 30.0 | 4.0 | 18.686 | O | 1 |
| A13339 | 15.0 | 51.0 | 30.0 | 4.0 | 17.258 | O | 1 |
| A13340 | 10.0 | 56.0 | 30.0 | 4.0 | 15.474 | O | 1 |
| A13341 | 9.0 | 57.0 | 30.0 | 4.0 | 15.117 | O | 1 |
| A13342 | 8.0 | 58.0 | 30.0 | 4.0 | 14.761 | O | 1 |
| A13343 | 7.0 | 59.0 | 30.0 | 4.0 | 14.354 | O | 1 |
| A13344 | 6.0 | 60.0 | 30.0 | 4.0 | 13.936 | O | 1 |
| A13345 | 5.0 | 61.0 | 30.0 | 4.0 | 13.518 | O | 1 |
| A13346 | 4.0 | 62.0 | 30.0 | 4.0 | 13.100 | O | 1 |
| A13347 | 3.0 | 63.0 | 30.0 | 4.0 | 12.682 | O | 1 |
| A13348 | 2.0 | 64.0 | 30.0 | 4.0 | 12.264 | O | 1 |
| A13349 | 1.0 | 65.0 | 30.0 | 4.0 | 11.846 | O | 1 |
| A13350 | 0.0 | 66.0 | 30.0 | 4.0 | 11.428 | O | 1 |
| A13351 | 19.0 | 37.0 | 40.0 | 4.0 | 19.245 | X | 1 |
| A13352 | 18.4 | 37.6 | 40.0 | 4.0 | 19.031 | X | 1 |
| A13353 | 18.3 | 37.7 | 40.0 | 4.0 | 18.996 | O | 1 |
| A13354 | 18.0 | 38.0 | 40.0 | 4.0 | 18.889 | O | 1 |
| A13355 | 15.0 | 41.0 | 40.0 | 4.0 | 17.818 | O | 1 |
| A13356 | 10.0 | 46.0 | 40.0 | 4.0 | 16.034 | O | 1 |
| A13357 | 9.0 | 47.0 | 40.0 | 4.0 | 15.677 | O | 1 |
| A13358 | 8.0 | 48.0 | 40.0 | 4.0 | 15.320 | O | 1 |
| A13359 | 7.0 | 49.0 | 40.0 | 4.0 | 14.964 | O | 1 |
| A13360 | 6.0 | 50.0 | 40.0 | 4.0 | 14.568 | O | 1 |
| A13361 | 5.0 | 51.0 | 40.0 | 4.0 | 14.150 | O | 1 |
| A13362 | 4.0 | 52.0 | 40.0 | 4.0 | 13.732 | O | 1 |
| A13363 | 3.0 | 53.0 | 40.0 | 4.0 | 13.314 | O | 1 |
| A13364 | 2.0 | 54.0 | 40.0 | 4.0 | 12.896 | O | 1 |
| A13365 | 1.0 | 55.0 | 40.0 | 4.0 | 12.478 | O | 1 |
| A13366 | 0.0 | 56.0 | 40.0 | 4.0 | 12.061 | O | 1 |
| A13367 | 17.0 | 29.0 | 50.0 | 4.0 | 19.092 | X | 1 |
| A13368 | 16.8 | 29.2 | 50.0 | 4.0 | 19.020 | X | 1 |
| A13369 | 16.7 | 29.3 | 50.0 | 4.0 | 18.985 | O | 1 |
| A13370 | 16.0 | 30.0 | 50.0 | 4.0 | 18.735 | O | 1 |
| A13371 | 15.0 | 31.0 | 50.0 | 4.0 | 18.378 | O | 1 |
| A13372 | 10.0 | 36.0 | 50.0 | 4.0 | 16.594 | O | 1 |
| A13373 | 9.0 | 37.0 | 50.0 | 4.0 | 16.237 | O | 1 |
| A13374 | 8.0 | 38.0 | 50.0 | 4.0 | 15.880 | O | 1 |
| A13375 | 7.0 | 39.0 | 50.0 | 4.0 | 15.523 | O | 1 |
| A13376 | 6.0 | 40.0 | 50.0 | 4.0 | 15.167 | O | 1 |

[Table 485]

| A13377 | 5.0 | 41.0 | 50.0 | 4.0 | 14.782 | O | 1 |
|---|---|---|---|---|---|---|---|
| A13378 | 4.0 | 42.0 | 50.0 | 4.0 | 14.364 | O | 1 |
| A13379 | 3.0 | 43.0 | 50.0 | 4.0 | 13.947 | O | 1 |
| A13380 | 2.0 | 44.0 | 50.0 | 4.0 | 13.529 | O | 1 |
| A13381 | 1.0 | 45.0 | 50.0 | 4.0 | 13.111 | O | 1 |
| A13382 | 0.0 | 46.0 | 50.0 | 4.0 | 12.693 | O | 1 |
| A13383 | 16.0 | 20.0 | 60.0 | 4.0 | 19.295 | X | 1 |
| A13384 | 15.2 | 20.8 | 60.0 | 4.0 | 19.009 | X | 1 |
| A13385 | 15.1 | 20.9 | 60.0 | 4.0 | 18.974 | O | 1 |
| A13386 | 15.0 | 21.0 | 60.0 | 4.0 | 18.938 | O | 1 |
| A13387 | 10.0 | 26.0 | 60.0 | 4.0 | 17.154 | O | 1 |
| A13388 | 9.0 | 27.0 | 60.0 | 4.0 | 16.797 | O | 1 |
| A13389 | 8.0 | 28.0 | 60.0 | 4.0 | 16.440 | O | 1 |
| A13390 | 7.0 | 29.0 | 60.0 | 4.0 | 16.083 | O | 1 |
| A13391 | 6.0 | 30.0 | 60.0 | 4.0 | 15.727 | O | 1 |
| A13392 | 5.0 | 31.0 | 60.0 | 4.0 | 15.370 | O | 1 |
| A13393 | 4.0 | 32.0 | 60.0 | 4.0 | 14.997 | O | 1 |
| A13394 | 3.0 | 33.0 | 60.0 | 4.0 | 14.579 | O | 1 |
| A13395 | 2.0 | 34.0 | 60.0 | 4.0 | 14.161 | O | 1 |
| A13396 | 1.0 | 35.0 | 60.0 | 4.0 | 13.743 | O | 1 |
| A13397 | 0.0 | 36.0 | 60.0 | 4.0 | 13.325 | O | 1 |
| A13398 | 14.0 | 12.0 | 70.0 | 4.0 | 19.141 | X | 1 |
| A13399 | 13.7 | 12.3 | 70.0 | 4.0 | 19.034 | X | 1 |
| A13400 | 13.6 | 12.4 | 70.0 | 4.0 | 18.998 | O | 1 |
| A13401 | 13.0 | 13.0 | 70.0 | 4.0 | 18.784 | O | 1 |
| A13402 | 10.0 | 16.0 | 70.0 | 4.0 | 17.714 | O | 1 |
| A13403 | 9.0 | 17.0 | 70.0 | 4.0 | 17.357 | O | 1 |
| A13404 | 8.0 | 18.0 | 70.0 | 4.0 | 17.000 | O | 1 |
| A13405 | 7.0 | 19.0 | 70.0 | 4.0 | 16.643 | O | 1 |
| A13406 | 6.0 | 20.0 | 70.0 | 4.0 | 16.286 | O | 1 |
| A13407 | 5.0 | 21.0 | 70.0 | 4.0 | 15.930 | O | 1 |
| A13408 | 4.0 | 22.0 | 70.0 | 4.0 | 15.573 | O | 1 |
| A13409 | 3.0 | 23.0 | 70.0 | 4.0 | 15.211 | O | 1 |
| A13410 | 2.0 | 24.0 | 70.0 | 4.0 | 14.793 | O | 1 |
| A13411 | 1.0 | 25.0 | 70.0 | 4.0 | 14.375 | O | 1 |
| A13412 | 0.0 | 26.0 | 70.0 | 4.0 | 13.957 | O | 1 |
| A13413 | 13.0 | 3.0 | 80.0 | 4.0 | 19.344 | X | 1 |
| A13414 | 12.1 | 3.9 | 80.0 | 4.0 | 19.023 | X | 1 |
| A13415 | 12.0 | 4.0 | 80.0 | 4.0 | 18.987 | O | 1 |
| A13416 | 10.0 | 6.0 | 80.0 | 4.0 | 18.273 | O | 1 |
| A13417 | 9.0 | 7.0 | 80.0 | 4.0 | 17.917 | O | 1 |
| A13418 | 8.0 | 8.0 | 80.0 | 4.0 | 17.560 | O | 1 |
| A13419 | 7.0 | 9.0 | 80.0 | 4.0 | 17.203 | O | 1 |
| A13420 | 6.0 | 10.0 | 80.0 | 4.0 | 16.846 | O | 1 |
| A13421 | 5.0 | 11.0 | 80.0 | 4.0 | 16.489 | O | 1 |
| A13422 | 4.0 | 12.0 | 80.0 | 4.0 | 16.133 | O | 1 |
| A13423 | 3.0 | 13.0 | 80.0 | 4.0 | 15.776 | O | 1 |
| A13424 | 2.0 | 14.0 | 80.0 | 4.0 | 15.419 | O | 1 |
| A13425 | 1.0 | 15.0 | 80.0 | 4.0 | 15.007 | O | 1 |
| A13426 | 0.0 | 16.0 | 80.0 | 4.0 | 14.589 | O | 1 |

[Table 486]

| A13427 | 24.0 | 60.0 | 10.0 | 6.0 | 19.137 | X | 1 |
|--------|------|------|------|-----|--------|---|---|
| A13428 | 23.7 | 60.3 | 10.0 | 6.0 | 19.030 | X | 1 |
| A13429 | 23.6 | 60.4 | 10.0 | 6.0 | 18.994 | O | 1 |
| A13430 | 23.0 | 61.0 | 10.0 | 6.0 | 18.780 | O | 1 |
| A13431 | 20.0 | 64.0 | 10.0 | 6.0 | 17.710 | O | 1 |
| A13432 | 15.0 | 69.0 | 10.0 | 6.0 | 15.926 | O | 1 |
| A13433 | 10.0 | 74.0 | 10.0 | 6.0 | 14.142 | O | 1 |
| A13434 | 9.0 | 75.0 | 10.0 | 6.0 | 13.727 | O | 1 |
| A13435 | 8.0 | 76.0 | 10.0 | 6.0 | 13.309 | O | 1 |
| A13436 | 7.0 | 77.0 | 10.0 | 6.0 | 12.891 | O | 1 |
| A13437 | 6.0 | 78.0 | 10.0 | 6.0 | 12.473 | O | 1 |
| A13438 | 5.0 | 79.0 | 10.0 | 6.0 | 12.055 | O | 1 |
| A13439 | 4.0 | 80.0 | 10.0 | 6.0 | 11.637 | O | 1 |
| A13440 | 3.0 | 81.0 | 10.0 | 6.0 | 11.219 | O | 1 |
| A13441 | 2.0 | 82.0 | 10.0 | 6.0 | 10.801 | O | 1 |
| A13442 | 1.0 | 83.0 | 10.0 | 6.0 | 10.383 | O | 1 |
| A13443 | 0.0 | 84.0 | 10.0 | 6.0 | 9.965 | O | 1 |
| A13444 | 23.0 | 51.0 | 20.0 | 6.0 | 19.340 | X | 1 |
| A13445 | 22.1 | 51.9 | 20.0 | 6.0 | 19.019 | X | 1 |
| A13446 | 22.0 | 52.0 | 20.0 | 6.0 | 18.983 | O | 1 |
| A13447 | 20.0 | 54.0 | 20.0 | 6.0 | 18.270 | O | 1 |
| A13448 | 15.0 | 59.0 | 20.0 | 6.0 | 16.485 | O | 1 |
| A13449 | 10.0 | 64.0 | 20.0 | 6.0 | 14.701 | O | 1 |
| A13450 | 9.0 | 65.0 | 20.0 | 6.0 | 14.345 | O | 1 |
| A13451 | 8.0 | 66.0 | 20.0 | 6.0 | 13.941 | O | 1 |
| A13452 | 7.0 | 67.0 | 20.0 | 6.0 | 13.523 | O | 1 |
| A13453 | 6.0 | 68.0 | 20.0 | 6.0 | 13.105 | O | 1 |
| A13454 | 5.0 | 69.0 | 20.0 | 6.0 | 12.687 | O | 1 |
| A13455 | 4.0 | 70.0 | 20.0 | 6.0 | 12.269 | O | 1 |
| A13456 | 3.0 | 71.0 | 20.0 | 6.0 | 11.851 | O | 1 |
| A13457 | 2.0 | 72.0 | 20.0 | 6.0 | 11.433 | O | 1 |
| A13458 | 1.0 | 73.0 | 20.0 | 6.0 | 11.015 | O | 1 |
| A13459 | 0.0 | 74.0 | 20.0 | 6.0 | 10.598 | O | 1 |
| A13460 | 21.0 | 43.0 | 30.0 | 6.0 | 19.186 | X | 1 |
| A13461 | 20.5 | 43.5 | 30.0 | 6.0 | 19.008 | X | 1 |
| A13462 | 20.4 | 43.6 | 30.0 | 6.0 | 18.972 | O | 1 |
| A13463 | 20.0 | 44.0 | 30.0 | 6.0 | 18.829 | O | 1 |
| A13464 | 15.0 | 49.0 | 30.0 | 6.0 | 17.045 | O | 1 |
| A13465 | 10.0 | 54.0 | 30.0 | 6.0 | 15.261 | O | 1 |
| A13466 | 9.0 | 55.0 | 30.0 | 6.0 | 14.904 | O | 1 |
| A13467 | 8.0 | 56.0 | 30.0 | 6.0 | 14.548 | O | 1 |
| A13468 | 7.0 | 57.0 | 30.0 | 6.0 | 14.155 | O | 1 |
| A13469 | 6.0 | 58.0 | 30.0 | 6.0 | 13.737 | O | 1 |
| A13470 | 5.0 | 59.0 | 30.0 | 6.0 | 13.319 | O | 1 |
| A13471 | 4.0 | 60.0 | 30.0 | 6.0 | 12.901 | O | 1 |
| A13472 | 3.0 | 61.0 | 30.0 | 6.0 | 12.484 | O | 1 |
| A13473 | 2.0 | 62.0 | 30.0 | 6.0 | 12.066 | O | 1 |
| A13474 | 1.0 | 63.0 | 30.0 | 6.0 | 11.648 | O | 1 |
| A13475 | 0.0 | 64.0 | 30.0 | 6.0 | 11.230 | O | 1 |
| A13476 | 19.0 | 35.0 | 40.0 | 6.0 | 19.032 | X | 1 |

[Table 487]

| | | | | | | | |
|---|---|---|---|---|---|---|---|
| A13477 | 18.9 | 35.1 | 40.0 | 6.0 | 18.997 | O | 1 |
| A13478 | 18.0 | 36.0 | 40.0 | 6.0 | 18.676 | O | 1 |
| A13479 | 15.0 | 39.0 | 40.0 | 6.0 | 17.605 | O | 1 |
| A13480 | 10.0 | 44.0 | 40.0 | 6.0 | 15.821 | O | 1 |
| A13481 | 9.0 | 45.0 | 40.0 | 6.0 | 15.464 | O | 1 |
| A13482 | 8.0 | 46.0 | 40.0 | 6.0 | 15.107 | O | 1 |
| A13483 | 7.0 | 47.0 | 40.0 | 6.0 | 14.751 | O | 1 |
| A13484 | 6.0 | 48.0 | 40.0 | 6.0 | 14.369 | O | 1 |
| A13485 | 5.0 | 49.0 | 40.0 | 6.0 | 13.952 | O | 1 |
| A13486 | 4.0 | 50.0 | 40.0 | 6.0 | 13.534 | O | 1 |
| A13487 | 3.0 | 51.0 | 40.0 | 6.0 | 13.116 | O | 1 |
| A13488 | 2.0 | 52.0 | 40.0 | 6.0 | 12.698 | O | 1 |
| A13489 | 1.0 | 53.0 | 40.0 | 6.0 | 12.280 | O | 1 |
| A13490 | 0.0 | 54.0 | 40.0 | 6.0 | 11.862 | O | 1 |
| A13491 | 18.0 | 26.0 | 50.0 | 6.0 | 19.235 | X | 1 |
| A13492 | 17.4 | 26.6 | 50.0 | 6.0 | 19.021 | X | 1 |
| A13493 | 17.3 | 26.7 | 50.0 | 6.0 | 18.986 | O | 1 |
| A13494 | 17.0 | 27.0 | 50.0 | 6.0 | 18.879 | O | 1 |
| A13495 | 15.0 | 29.0 | 50.0 | 6.0 | 18.165 | O | 1 |
| A13496 | 10.0 | 34.0 | 50.0 | 6.0 | 16.381 | O | 1 |
| A13497 | 9.0 | 35.0 | 50.0 | 6.0 | 16.024 | O | 1 |
| A13498 | 8.0 | 36.0 | 50.0 | 6.0 | 15.667 | O | 1 |
| A13499 | 7.0 | 37.0 | 50.0 | 6.0 | 15.310 | O | 1 |
| A13500 | 6.0 | 38.0 | 50.0 | 6.0 | 14.954 | O | 1 |
| A13501 | 5.0 | 39.0 | 50.0 | 6.0 | 14.584 | O | 1 |
| A13502 | 4.0 | 40.0 | 50.0 | 6.0 | 14.166 | O | 1 |
| A13503 | 3.0 | 41.0 | 50.0 | 6.0 | 13.748 | O | 1 |
| A13504 | 2.0 | 42.0 | 50.0 | 6.0 | 13.330 | O | 1 |
| A13505 | 1.0 | 43.0 | 50.0 | 6.0 | 12.912 | O | 1 |
| A13506 | 0.0 | 44.0 | 50.0 | 6.0 | 12.494 | O | 1 |
| A13507 | 16.0 | 18.0 | 60.0 | 6.0 | 19.082 | X | 1 |
| A13508 | 15.8 | 18.2 | 60.0 | 6.0 | 19.010 | X | 1 |
| A13509 | 15.7 | 18.3 | 60.0 | 6.0 | 18.975 | O | 1 |
| A13510 | 15.0 | 19.0 | 60.0 | 6.0 | 18.725 | O | 1 |
| A13511 | 10.0 | 24.0 | 60.0 | 6.0 | 16.941 | O | 1 |
| A13512 | 9.0 | 25.0 | 60.0 | 6.0 | 16.584 | O | 1 |
| A13513 | 8.0 | 26.0 | 60.0 | 6.0 | 16.227 | O | 1 |
| A13514 | 7.0 | 27.0 | 60.0 | 6.0 | 15.870 | O | 1 |
| A13515 | 6.0 | 28.0 | 60.0 | 6.0 | 15.513 | O | 1 |
| A13516 | 5.0 | 29.0 | 60.0 | 6.0 | 15.157 | O | 1 |
| A13517 | 4.0 | 30.0 | 60.0 | 6.0 | 14.798 | O | 1 |
| A13518 | 3.0 | 31.0 | 60.0 | 6.0 | 14.380 | O | 1 |
| A13519 | 2.0 | 32.0 | 60.0 | 6.0 | 13.962 | O | 1 |
| A13520 | 1.0 | 33.0 | 60.0 | 6.0 | 13.544 | O | 1 |
| A13521 | 0.0 | 34.0 | 60.0 | 6.0 | 13.126 | O | 1 |
| A13522 | 15.0 | 9.0 | 70.0 | 6.0 | 19.285 | X | 1 |
| A13523 | 14.3 | 9.7 | 70.0 | 6.0 | 19.035 | X | 1 |
| A13524 | 14.2 | 9.8 | 70.0 | 6.0 | 18.999 | O | 1 |
| A13525 | 14.0 | 10.0 | 70.0 | 6.0 | 18.928 | O | 1 |
| A13526 | 10.0 | 14.0 | 70.0 | 6.0 | 17.501 | O | 1 |

[Table 488]

| | | | | | | | |
|---|---|---|---|---|---|---|---|
| A13527 | 9.0 | 15.0 | 70.0 | 6.0 | 17.144 | O | 1 |
| A13528 | 8.0 | 16.0 | 70.0 | 6.0 | 16.787 | O | 1 |
| A13529 | 7.0 | 17.0 | 70.0 | 6.0 | 16.430 | O | 1 |
| A13530 | 6.0 | 18.0 | 70.0 | 6.0 | 16.073 | O | 1 |
| A13531 | 5.0 | 19.0 | 70.0 | 6.0 | 15.716 | O | 1 |
| A13532 | 4.0 | 20.0 | 70.0 | 6.0 | 15.360 | O | 1 |
| A13533 | 3.0 | 21.0 | 70.0 | 6.0 | 15.003 | O | 1 |
| A13534 | 2.0 | 22.0 | 70.0 | 6.0 | 14.595 | O | 1 |
| A13535 | 1.0 | 23.0 | 70.0 | 6.0 | 14.177 | O | 1 |
| A13536 | 0.0 | 24.0 | 70.0 | 6.0 | 13.759 | O | 1 |
| A13537 | 13.0 | 1.0 | 80.0 | 6.0 | 19.131 | X | 1 |
| A13538 | 12.7 | 1.3 | 80.0 | 6.0 | 19.024 | X | 1 |
| A13539 | 12.6 | 1.4 | 80.0 | 6.0 | 18.988 | O | 1 |
| A13540 | 12.0 | 2.0 | 80.0 | 6.0 | 18.774 | O | 1 |
| A13541 | 10.0 | 4.0 | 80.0 | 6.0 | 18.060 | O | 1 |
| A13542 | 9.0 | 5.0 | 80.0 | 6.0 | 17.704 | O | 1 |
| A13543 | 8.0 | 6.0 | 80.0 | 6.0 | 17.347 | O | 1 |
| A13544 | 7.0 | 7.0 | 80.0 | 6.0 | 16.990 | O | 1 |
| A13545 | 6.0 | 8.0 | 80.0 | 6.0 | 16.633 | O | 1 |
| A13546 | 5.0 | 9.0 | 80.0 | 6.0 | 16.276 | O | 1 |
| A13547 | 4.0 | 10.0 | 80.0 | 6.0 | 15.920 | O | 1 |
| A13548 | 3.0 | 11.0 | 80.0 | 6.0 | 15.563 | O | 1 |
| A13549 | 2.0 | 12.0 | 80.0 | 6.0 | 15.206 | O | 1 |
| A13550 | 1.0 | 13.0 | 80.0 | 6.0 | 14.809 | O | 1 |
| A13551 | 0.0 | 14.0 | 80.0 | 6.0 | 14.391 | O | 1 |
| A13552 | 25.0 | 57.0 | 10.0 | 8.0 | 19.281 | X | 1 |
| A13553 | 24.3 | 57.7 | 10.0 | 8.0 | 19.031 | X | 1 |
| A13554 | 24.2 | 57.8 | 10.0 | 8.0 | 18.995 | O | 1 |
| A13555 | 24.0 | 58.0 | 10.0 | 8.0 | 18.924 | O | 1 |
| A13556 | 20.0 | 62.0 | 10.0 | 8.0 | 17.497 | O | 1 |
| A13557 | 15.0 | 67.0 | 10.0 | 8.0 | 15.713 | O | 1 |
| A13558 | 10.0 | 72.0 | 10.0 | 8.0 | 13.928 | O | 1 |
| A13559 | 9.0 | 73.0 | 10.0 | 8.0 | 13.528 | O | 1 |
| A13560 | 8.0 | 74.0 | 10.0 | 8.0 | 13.110 | O | 1 |
| A13561 | 7.0 | 75.0 | 10.0 | 8.0 | 12.692 | O | 1 |
| A13562 | 6.0 | 76.0 | 10.0 | 8.0 | 12.274 | O | 1 |
| A13563 | 5.0 | 77.0 | 10.0 | 8.0 | 11.856 | O | 1 |
| A13564 | 4.0 | 78.0 | 10.0 | 8.0 | 11.438 | O | 1 |
| A13565 | 3.0 | 79.0 | 10.0 | 8.0 | 11.020 | O | 1 |
| A13566 | 2.0 | 80.0 | 10.0 | 8.0 | 10.603 | O | 1 |
| A13567 | 1.0 | 81.0 | 10.0 | 8.0 | 10.185 | O | 1 |
| A13568 | 0.0 | 82.0 | 10.0 | 8.0 | 9.767 | O | 1 |
| A13569 | 23.0 | 49.0 | 20.0 | 8.0 | 19.127 | X | 1 |
| A13570 | 22.7 | 49.3 | 20.0 | 8.0 | 19.020 | X | 1 |
| A13571 | 22.6 | 49.4 | 20.0 | 8.0 | 18.984 | O | 1 |
| A13572 | 22.0 | 50.0 | 20.0 | 8.0 | 18.770 | O | 1 |
| A13573 | 20.0 | 52.0 | 20.0 | 8.0 | 18.056 | O | 1 |
| A13574 | 15.0 | 57.0 | 20.0 | 8.0 | 16.272 | O | 1 |
| A13575 | 10.0 | 62.0 | 20.0 | 8.0 | 14.488 | O | 1 |
| A13576 | 9.0 | 63.0 | 20.0 | 8.0 | 14.132 | O | 1 |

[Table 489]

| A13577 | 8.0 | 64.0 | 20.0 | 8.0 | 13.742 | O | 1 |
|---|---|---|---|---|---|---|---|
| A13578 | 7.0 | 65.0 | 20.0 | 8.0 | 13.324 | O | 1 |
| A13579 | 6.0 | 66.0 | 20.0 | 8.0 | 12.906 | O | 1 |
| A13580 | 5.0 | 67.0 | 20.0 | 8.0 | 12.489 | O | 1 |
| A13581 | 4.0 | 68.0 | 20.0 | 8.0 | 12.071 | O | 1 |
| A13582 | 3.0 | 69.0 | 20.0 | 8.0 | 11.653 | O | 1 |
| A13583 | 2.0 | 70.0 | 20.0 | 8.0 | 11.235 | O | 1 |
| A13584 | 1.0 | 71.0 | 20.0 | 8.0 | 10.817 | O | 1 |
| A13585 | 0.0 | 72.0 | 20.0 | 8.0 | 10.399 | O | 1 |
| A13586 | 22.0 | 40.0 | 30.0 | 8.0 | 19.330 | X | 1 |
| A13587 | 21.1 | 40.9 | 30.0 | 8.0 | 19.009 | X | 1 |
| A13588 | 21.0 | 41.0 | 30.0 | 8.0 | 18.973 | O | 1 |
| A13589 | 20.0 | 42.0 | 30.0 | 8.0 | 18.616 | O | 1 |
| A13590 | 15.0 | 47.0 | 30.0 | 8.0 | 16.832 | O | 1 |
| A13591 | 10.0 | 52.0 | 30.0 | 8.0 | 15.048 | O | 1 |
| A13592 | 9.0 | 53.0 | 30.0 | 8.0 | 14.691 | O | 1 |
| A13593 | 8.0 | 54.0 | 30.0 | 8.0 | 14.335 | O | 1 |
| A13594 | 7.0 | 55.0 | 30.0 | 8.0 | 13.957 | O | 1 |
| A13595 | 6.0 | 56.0 | 30.0 | 8.0 | 13.539 | O | 1 |
| A13596 | 5.0 | 57.0 | 30.0 | 8.0 | 13.121 | O | 1 |
| A13597 | 4.0 | 58.0 | 30.0 | 8.0 | 12.703 | O | 1 |
| A13598 | 3.0 | 59.0 | 30.0 | 8.0 | 12.285 | O | 1 |
| A13599 | 2.0 | 60.0 | 30.0 | 8.0 | 11.867 | O | 1 |
| A13600 | 1.0 | 61.0 | 30.0 | 8.0 | 11.449 | O | 1 |
| A13601 | 0.0 | 62.0 | 30.0 | 8.0 | 11.031 | O | 1 |
| A13602 | 20.0 | 32.0 | 40.0 | 8.0 | 19.176 | X | 1 |
| A13603 | 19.6 | 32.4 | 40.0 | 8.0 | 19.033 | X | 1 |
| A13604 | 19.5 | 32.5 | 40.0 | 8.0 | 18.998 | O | 1 |
| A13605 | 19.0 | 33.0 | 40.0 | 8.0 | 18.819 | O | 1 |
| A13606 | 15.0 | 37.0 | 40.0 | 8.0 | 17.392 | O | 1 |
| A13607 | 10.0 | 42.0 | 40.0 | 8.0 | 15.608 | O | 1 |
| A13608 | 9.0 | 43.0 | 40.0 | 8.0 | 15.251 | O | 1 |
| A13609 | 8.0 | 44.0 | 40.0 | 8.0 | 14.894 | O | 1 |
| A13610 | 7.0 | 45.0 | 40.0 | 8.0 | 14.538 | O | 1 |
| A13611 | 6.0 | 46.0 | 40.0 | 8.0 | 14.171 | O | 1 |
| A13612 | 5.0 | 47.0 | 40.0 | 8.0 | 13.753 | O | 1 |
| A13613 | 4.0 | 48.0 | 40.0 | 8.0 | 13.335 | O | 1 |
| A13614 | 3.0 | 49.0 | 40.0 | 8.0 | 12.917 | O | 1 |
| A13615 | 2.0 | 50.0 | 40.0 | 8.0 | 12.499 | O | 1 |
| A13616 | 1.0 | 51.0 | 40.0 | 8.0 | 12.081 | O | 1 |
| A13617 | 0.0 | 52.0 | 40.0 | 8.0 | 11.663 | O | 1 |
| A13618 | 18.0 | 24.0 | 50.0 | 8.0 | 19.022 | X | 1 |
| A13619 | 17.9 | 24.1 | 50.0 | 8.0 | 18.987 | O | 1 |
| A13620 | 17.0 | 25.0 | 50.0 | 8.0 | 18.666 | O | 1 |
| A13621 | 15.0 | 27.0 | 50.0 | 8.0 | 17.952 | O | 1 |
| A13622 | 10.0 | 32.0 | 50.0 | 8.0 | 16.168 | O | 1 |
| A13623 | 9.0 | 33.0 | 50.0 | 8.0 | 15.811 | O | 1 |
| A13624 | 8.0 | 34.0 | 50.0 | 8.0 | 15.454 | O | 1 |
| A13625 | 7.0 | 35.0 | 50.0 | 8.0 | 15.097 | O | 1 |
| A13626 | 6.0 | 36.0 | 50.0 | 8.0 | 14.741 | O | 1 |

[Table 490]

| | | | | | | | |
|---|---|---|---|---|---|---|---|
| A13627 | 5.0 | 37.0 | 50.0 | 8.0 | 14.384 | O | 1 |
| A13628 | 4.0 | 38.0 | 50.0 | 8.0 | 13.967 | O | 1 |
| A13629 | 3.0 | 39.0 | 50.0 | 8.0 | 13.549 | O | 1 |
| A13630 | 2.0 | 40.0 | 50.0 | 8.0 | 13.131 | O | 1 |
| A13631 | 1.0 | 41.0 | 50.0 | 8.0 | 12.714 | O | 1 |
| A13632 | 0.0 | 42.0 | 50.0 | 8.0 | 12.296 | O | 1 |
| A13633 | 17.0 | 15.0 | 60.0 | 8.0 | 19.225 | X | 1 |
| A13634 | 16.4 | 15.6 | 60.0 | 8.0 | 19.011 | X | 1 |
| A13635 | 16.3 | 15.7 | 60.0 | 8.0 | 18.976 | O | 1 |
| A13636 | 16.0 | 16.0 | 60.0 | 8.0 | 18.869 | O | 1 |
| A13637 | 15.0 | 17.0 | 60.0 | 8.0 | 18.512 | O | 1 |
| A13638 | 10.0 | 22.0 | 60.0 | 8.0 | 16.728 | O | 1 |
| A13639 | 9.0 | 23.0 | 60.0 | 8.0 | 16.371 | O | 1 |
| A13640 | 8.0 | 24.0 | 60.0 | 8.0 | 16.014 | O | 1 |
| A13641 | 7.0 | 25.0 | 60.0 | 8.0 | 15.657 | O | 1 |
| A13642 | 6.0 | 26.0 | 60.0 | 8.0 | 15.300 | O | 1 |
| A13643 | 5.0 | 27.0 | 60.0 | 8.0 | 14.944 | O | 1 |
| A13644 | 4.0 | 28.0 | 60.0 | 8.0 | 14.587 | O | 1 |
| A13645 | 3.0 | 29.0 | 60.0 | 8.0 | 14.182 | O | 1 |
| A13646 | 2.0 | 30.0 | 60.0 | 8.0 | 13.764 | O | 1 |
| A13647 | 1.0 | 31.0 | 60.0 | 8.0 | 13.346 | O | 1 |
| A13648 | 0.0 | 32.0 | 60.0 | 8.0 | 12.928 | O | 1 |
| A13649 | 15.0 | 7.0 | 70.0 | 8.0 | 19.072 | X | 1 |
| A13650 | 14.8 | 7.2 | 70.0 | 8.0 | 19.000 | X | 1 |
| A13651 | 14.7 | 7.3 | 70.0 | 8.0 | 18.965 | O | 1 |
| A13652 | 14.0 | 8.0 | 70.0 | 8.0 | 18.715 | O | 1 |
| A13653 | 10.0 | 12.0 | 70.0 | 8.0 | 17.288 | O | 1 |
| A13654 | 9.0 | 13.0 | 70.0 | 8.0 | 16.931 | O | 1 |
| A13655 | 8.0 | 14.0 | 70.0 | 8.0 | 16.574 | O | 1 |
| A13656 | 7.0 | 15.0 | 70.0 | 8.0 | 16.217 | O | 1 |
| A13657 | 6.0 | 16.0 | 70.0 | 8.0 | 15.860 | O | 1 |
| A13658 | 5.0 | 17.0 | 70.0 | 8.0 | 15.503 | O | 1 |
| A13659 | 4.0 | 18.0 | 70.0 | 8.0 | 15.147 | O | 1 |
| A13660 | 3.0 | 19.0 | 70.0 | 8.0 | 14.790 | O | 1 |
| A13661 | 2.0 | 20.0 | 70.0 | 8.0 | 14.396 | O | 1 |
| A13662 | 1.0 | 21.0 | 70.0 | 8.0 | 13.978 | O | 1 |
| A13663 | 0.0 | 22.0 | 70.0 | 8.0 | 13.560 | O | 1 |
| A13664 | 25.0 | 55.0 | 10.0 | 10.0 | 19.068 | X | 1 |
| A13665 | 24.9 | 55.1 | 10.0 | 10.0 | 19.032 | X | 1 |
| A13666 | 24.8 | 55.2 | 10.0 | 10.0 | 18.996 | O | 1 |
| A13667 | 24.0 | 56.0 | 10.0 | 10.0 | 18.711 | O | 1 |
| A13668 | 20.0 | 60.0 | 10.0 | 10.0 | 17.284 | O | 1 |
| A13669 | 15.0 | 65.0 | 10.0 | 10.0 | 15.500 | O | 1 |
| A13670 | 10.0 | 70.0 | 10.0 | 10.0 | 13.715 | O | 1 |
| A13671 | 9.0 | 71.0 | 10.0 | 10.0 | 13.329 | O | 1 |
| A13672 | 8.0 | 72.0 | 10.0 | 10.0 | 12.911 | O | 1 |
| A13673 | 7.0 | 73.0 | 10.0 | 10.0 | 12.494 | O | 1 |
| A13674 | 6.0 | 74.0 | 10.0 | 10.0 | 12.076 | O | 1 |
| A13675 | 5.0 | 75.0 | 10.0 | 10.0 | 11.658 | O | 1 |
| A13676 | 4.0 | 76.0 | 10.0 | 10.0 | 11.240 | O | 1 |

[Table 491]

| | | | | | | | |
|---|---|---|---|---|---|---|---|
| A13677 | 3.0 | 77.0 | 10.0 | 10.0 | 10.822 | O | 1 |
| A13678 | 2.0 | 78.0 | 10.0 | 10.0 | 10.404 | O | 1 |
| A13679 | 1.0 | 79.0 | 10.0 | 10.0 | 9.986 | O | 1 |
| A13680 | 0.0 | 80.0 | 10.0 | 10.0 | 9.568 | O | 1 |
| A13681 | 24.0 | 46.0 | 20.0 | 10.0 | 19.271 | X | 1 |
| A13682 | 23.3 | 46.7 | 20.0 | 10.0 | 19.021 | X | 1 |
| A13683 | 23.2 | 46.8 | 20.0 | 10.0 | 18.985 | O | 1 |
| A13684 | 23.0 | 47.0 | 20.0 | 10.0 | 18.914 | O | 1 |
| A13685 | 20.0 | 50.0 | 20.0 | 10.0 | 17.843 | O | 1 |
| A13686 | 15.0 | 55.0 | 20.0 | 10.0 | 16.059 | O | 1 |
| A13687 | 10.0 | 60.0 | 20.0 | 10.0 | 14.275 | O | 1 |
| A13688 | 9.0 | 61.0 | 20.0 | 10.0 | 13.918 | O | 1 |
| A13689 | 8.0 | 62.0 | 20.0 | 10.0 | 13.544 | O | 1 |
| A13690 | 7.0 | 63.0 | 20.0 | 10.0 | 13.126 | O | 1 |
| A13691 | 6.0 | 64.0 | 20.0 | 10.0 | 12.708 | O | 1 |
| A13692 | 5.0 | 65.0 | 20.0 | 10.0 | 12.290 | O | 1 |
| A13693 | 4.0 | 66.0 | 20.0 | 10.0 | 11.872 | O | 1 |
| A13694 | 3.0 | 67.0 | 20.0 | 10.0 | 11.454 | O | 1 |
| A13695 | 2.0 | 68.0 | 20.0 | 10.0 | 11.036 | O | 1 |
| A13696 | 1.0 | 69.0 | 20.0 | 10.0 | 10.618 | O | 1 |
| A13697 | 0.0 | 70.0 | 20.0 | 10.0 | 10.200 | O | 1 |
| A13698 | 22.0 | 38.0 | 30.0 | 10.0 | 19.117 | X | 1 |
| A13699 | 21.7 | 38.3 | 30.0 | 10.0 | 19.010 | X | 1 |
| A13700 | 21.6 | 38.4 | 30.0 | 10.0 | 18.974 | O | 1 |
| A13701 | 21.0 | 39.0 | 30.0 | 10.0 | 18.760 | O | 1 |
| A13702 | 20.0 | 40.0 | 30.0 | 10.0 | 18.403 | O | 1 |
| A13703 | 15.0 | 45.0 | 30.0 | 10.0 | 16.619 | O | 1 |
| A13704 | 10.0 | 50.0 | 30.0 | 10.0 | 14.835 | O | 1 |
| A13705 | 9.0 | 51.0 | 30.0 | 10.0 | 14.478 | O | 1 |
| A13706 | 8.0 | 52.0 | 30.0 | 10.0 | 14.121 | O | 1 |
| A13707 | 7.0 | 53.0 | 30.0 | 10.0 | 13.758 | O | 1 |
| A13708 | 6.0 | 54.0 | 30.0 | 10.0 | 13.340 | O | 1 |
| A13709 | 5.0 | 55.0 | 30.0 | 10.0 | 12.922 | O | 1 |
| A13710 | 4.0 | 56.0 | 30.0 | 10.0 | 12.504 | O | 1 |
| A13711 | 3.0 | 57.0 | 30.0 | 10.0 | 12.086 | O | 1 |
| A13712 | 2.0 | 58.0 | 30.0 | 10.0 | 11.668 | O | 1 |
| A13713 | 1.0 | 59.0 | 30.0 | 10.0 | 11.251 | O | 1 |
| A13714 | 0.0 | 60.0 | 30.0 | 10.0 | 10.833 | O | 1 |
| A13715 | 21.0 | 29.0 | 40.0 | 10.0 | 19.320 | X | 1 |
| A13716 | 20.2 | 29.8 | 40.0 | 10.0 | 19.034 | X | 1 |
| A13717 | 20.1 | 29.9 | 40.0 | 10.0 | 18.999 | O | 1 |
| A13718 | 20.0 | 30.0 | 40.0 | 10.0 | 18.963 | O | 1 |
| A13719 | 15.0 | 35.0 | 40.0 | 10.0 | 17.179 | O | 1 |
| A13720 | 10.0 | 40.0 | 40.0 | 10.0 | 15.395 | O | 1 |
| A13721 | 9.0 | 41.0 | 40.0 | 10.0 | 15.038 | O | 1 |
| A13722 | 8.0 | 42.0 | 40.0 | 10.0 | 14.681 | O | 1 |
| A13723 | 7.0 | 43.0 | 40.0 | 10.0 | 14.324 | O | 1 |
| A13724 | 6.0 | 44.0 | 40.0 | 10.0 | 13.968 | O | 1 |
| A13725 | 5.0 | 45.0 | 40.0 | 10.0 | 13.554 | O | 1 |
| A13726 | 4.0 | 46.0 | 40.0 | 10.0 | 13.137 | O | 1 |

[Table 492]

| | | | | | | | |
|---|---|---|---|---|---|---|---|
| A13727 | 3.0 | 47.0 | 40.0 | 10.0 | 12.719 | O | 1 |
| A13728 | 2.0 | 48.0 | 40.0 | 10.0 | 12.301 | O | 1 |
| A13729 | 1.0 | 49.0 | 40.0 | 10.0 | 11.883 | O | 1 |
| A13730 | 0.0 | 50.0 | 40.0 | 10.0 | 11.465 | O | 1 |
| A13731 | 19.0 | 21.0 | 50.0 | 10.0 | 19.166 | X | 1 |
| A13732 | 18.6 | 21.4 | 50.0 | 10.0 | 19.023 | X | 1 |
| A13733 | 18.5 | 21.5 | 50.0 | 10.0 | 18.988 | O | 1 |
| A13734 | 18.0 | 22.0 | 50.0 | 10.0 | 18.809 | O | 1 |
| A13735 | 15.0 | 25.0 | 50.0 | 10.0 | 17.739 | O | 1 |
| A13736 | 10.0 | 30.0 | 50.0 | 10.0 | 15.955 | O | 1 |
| A13737 | 9.0 | 31.0 | 50.0 | 10.0 | 15.598 | O | 1 |
| A13738 | 8.0 | 32.0 | 50.0 | 10.0 | 15.241 | O | 1 |
| A13739 | 7.0 | 33.0 | 50.0 | 10.0 | 14.884 | O | 1 |
| A13740 | 6.0 | 34.0 | 50.0 | 10.0 | 14.528 | O | 1 |
| A13741 | 5.0 | 35.0 | 50.0 | 10.0 | 14.171 | O | 1 |
| A13742 | 4.0 | 36.0 | 50.0 | 10.0 | 13.769 | O | 1 |
| A13743 | 3.0 | 37.0 | 50.0 | 10.0 | 13.351 | O | 1 |
| A13744 | 2.0 | 38.0 | 50.0 | 10.0 | 12.933 | O | 1 |
| A13745 | 1.0 | 39.0 | 50.0 | 10.0 | 12.515 | O | 1 |
| A13746 | 0.0 | 40.0 | 50.0 | 10.0 | 12.097 | O | 1 |
| A13747 | 17.0 | 13.0 | 60.0 | 10.0 | 19.012 | X | 1 |
| A13748 | 16.9 | 13.1 | 60.0 | 10.0 | 18.977 | O | 1 |
| A13749 | 16.0 | 14.0 | 60.0 | 10.0 | 18.655 | O | 1 |
| A13750 | 15.0 | 15.0 | 60.0 | 10.0 | 18.299 | O | 1 |
| A13751 | 10.0 | 20.0 | 60.0 | 10.0 | 16.515 | O | 1 |
| A13752 | 9.0 | 21.0 | 60.0 | 10.0 | 16.158 | O | 1 |
| A13753 | 8.0 | 22.0 | 60.0 | 10.0 | 15.801 | O | 1 |
| A13754 | 7.0 | 23.0 | 60.0 | 10.0 | 15.444 | O | 1 |
| A13755 | 6.0 | 24.0 | 60.0 | 10.0 | 15.087 | O | 1 |
| A13756 | 5.0 | 25.0 | 60.0 | 10.0 | 14.731 | O | 1 |
| A13757 | 4.0 | 26.0 | 60.0 | 10.0 | 14.374 | O | 1 |
| A13758 | 3.0 | 27.0 | 60.0 | 10.0 | 13.983 | O | 1 |
| A13759 | 2.0 | 28.0 | 60.0 | 10.0 | 13.565 | O | 1 |
| A13760 | 1.0 | 29.0 | 60.0 | 10.0 | 13.147 | O | 1 |
| A13761 | 0.0 | 30.0 | 60.0 | 10.0 | 12.729 | O | 1 |
| A13762 | 16.0 | 4.0 | 70.0 | 10.0 | 19.215 | X | 1 |
| A13763 | 15.4 | 4.6 | 70.0 | 10.0 | 19.001 | X | 1 |
| A13764 | 15.3 | 4.7 | 70.0 | 10.0 | 18.966 | O | 1 |
| A13765 | 15.0 | 5.0 | 70.0 | 10.0 | 18.859 | O | 1 |
| A13766 | 10.0 | 10.0 | 70.0 | 10.0 | 17.074 | O | 1 |
| A13767 | 9.0 | 11.0 | 70.0 | 10.0 | 16.718 | O | 1 |
| A13768 | 8.0 | 12.0 | 70.0 | 10.0 | 16.361 | O | 1 |
| A13769 | 7.0 | 13.0 | 70.0 | 10.0 | 16.004 | O | 1 |
| A13770 | 6.0 | 14.0 | 70.0 | 10.0 | 15.647 | O | 1 |
| A13771 | 5.0 | 15.0 | 70.0 | 10.0 | 15.290 | O | 1 |
| A13772 | 4.0 | 16.0 | 70.0 | 10.0 | 14.934 | O | 1 |
| A13773 | 3.0 | 17.0 | 70.0 | 10.0 | 14.577 | O | 1 |
| A13774 | 2.0 | 18.0 | 70.0 | 10.0 | 14.197 | O | 1 |
| A13775 | 1.0 | 19.0 | 70.0 | 10.0 | 13.779 | O | 1 |
| A13776 | 0.0 | 20.0 | 70.0 | 10.0 | 13.362 | O | 1 |

Tables 493 to 502 show the composition, combustion heat amount, and GWP of the working medium of a four-component system of propane, HFO-1123, HFO-1132(E), and $CF_3I$.

[Table 493]

| Case | propane | HFO-1123 | HFO-1132(E) | CF$_3$I | Heat of Combustion | Evaluation | GWP |
|---|---|---|---|---|---|---|---|
| A13777 | 24.0 | 61.0 | 10.0 | 5.0 | 19.310 | X | 1 |
| A13778 | 23.2 | 61.8 | 10.0 | 5.0 | 19.025 | X | 1 |
| A13779 | 23.1 | 61.9 | 10.0 | 5.0 | 18.989 | O | 1 |
| A13780 | 23.0 | 62.0 | 10.0 | 5.0 | 18.953 | O | 1 |
| A13781 | 20.0 | 65.0 | 10.0 | 5.0 | 17.883 | O | 1 |
| A13782 | 15.0 | 70.0 | 10.0 | 5.0 | 16.099 | O | 1 |
| A13783 | 10.0 | 75.0 | 10.0 | 5.0 | 14.288 | O | 1 |
| A13784 | 9.0 | 76.0 | 10.0 | 5.0 | 13.870 | O | 1 |
| A13785 | 8.0 | 77.0 | 10.0 | 5.0 | 13.452 | O | 1 |
| A13786 | 7.0 | 78.0 | 10.0 | 5.0 | 13.034 | O | 1 |
| A13787 | 6.0 | 79.0 | 10.0 | 5.0 | 12.616 | O | 1 |
| A13788 | 5.0 | 80.0 | 10.0 | 5.0 | 12.198 | O | 1 |
| A13789 | 4.0 | 81.0 | 10.0 | 5.0 | 11.780 | O | 1 |
| A13790 | 3.0 | 82.0 | 10.0 | 5.0 | 11.362 | O | 1 |
| A13791 | 2.0 | 83.0 | 10.0 | 5.0 | 10.944 | O | 1 |
| A13792 | 1.0 | 84.0 | 10.0 | 5.0 | 10.526 | O | 1 |
| A13793 | 0.0 | 85.0 | 10.0 | 5.0 | 10.108 | O | 1 |
| A13794 | 22.0 | 53.0 | 20.0 | 5.0 | 19.156 | X | 1 |
| A13795 | 21.6 | 53.4 | 20.0 | 5.0 | 19.013 | X | 1 |
| A13796 | 21.5 | 53.5 | 20.0 | 5.0 | 18.978 | O | 1 |
| A13797 | 21.0 | 54.0 | 20.0 | 5.0 | 18.799 | O | 1 |
| A13798 | 20.0 | 55.0 | 20.0 | 5.0 | 18.443 | O | 1 |
| A13799 | 15.0 | 60.0 | 20.0 | 5.0 | 16.659 | O | 1 |
| A13800 | 10.0 | 65.0 | 20.0 | 5.0 | 14.874 | O | 1 |
| A13801 | 9.0 | 66.0 | 20.0 | 5.0 | 14.502 | O | 1 |
| A13802 | 8.0 | 67.0 | 20.0 | 5.0 | 14.084 | O | 1 |
| A13803 | 7.0 | 68.0 | 20.0 | 5.0 | 13.666 | O | 1 |
| A13804 | 6.0 | 69.0 | 20.0 | 5.0 | 13.248 | O | 1 |
| A13805 | 5.0 | 70.0 | 20.0 | 5.0 | 12.830 | O | 1 |
| A13806 | 4.0 | 71.0 | 20.0 | 5.0 | 12.412 | O | 1 |
| A13807 | 3.0 | 72.0 | 20.0 | 5.0 | 11.994 | O | 1 |
| A13808 | 2.0 | 73.0 | 20.0 | 5.0 | 11.576 | O | 1 |
| A13809 | 1.0 | 74.0 | 20.0 | 5.0 | 11.159 | O | 1 |
| A13810 | 0.0 | 75.0 | 20.0 | 5.0 | 10.741 | O | 1 |
| A13811 | 20.0 | 45.0 | 30.0 | 5.0 | 19.002 | X | 1 |
| A13812 | 19.9 | 45.1 | 30.0 | 5.0 | 18.967 | O | 1 |
| A13813 | 19.0 | 46.0 | 30.0 | 5.0 | 18.646 | O | 1 |
| A13814 | 15.0 | 50.0 | 30.0 | 5.0 | 17.218 | O | 1 |
| A13815 | 10.0 | 55.0 | 30.0 | 5.0 | 15.434 | O | 1 |
| A13816 | 9.0 | 56.0 | 30.0 | 5.0 | 15.077 | O | 1 |
| A13817 | 8.0 | 57.0 | 30.0 | 5.0 | 14.716 | O | 1 |
| A13818 | 7.0 | 58.0 | 30.0 | 5.0 | 14.298 | O | 1 |
| A13819 | 6.0 | 59.0 | 30.0 | 5.0 | 13.880 | O | 1 |
| A13820 | 5.0 | 60.0 | 30.0 | 5.0 | 13.462 | O | 1 |
| A13821 | 4.0 | 61.0 | 30.0 | 5.0 | 13.045 | O | 1 |
| A13822 | 3.0 | 62.0 | 30.0 | 5.0 | 12.627 | O | 1 |
| A13823 | 2.0 | 63.0 | 30.0 | 5.0 | 12.209 | O | 1 |
| A13824 | 1.0 | 64.0 | 30.0 | 5.0 | 11.791 | O | 1 |
| A13825 | 0.0 | 65.0 | 30.0 | 5.0 | 11.373 | O | 1 |
| A13826 | 19.0 | 36.0 | 40.0 | 5.0 | 19.205 | X | 1 |

[Table 494]

| | | | | | | | |
|---|---|---|---|---|---|---|---|
| A13827 | 18.5 | 36.5 | 40.0 | 5.0 | 19.027 | X | 1 |
| A13828 | 18.4 | 36.6 | 40.0 | 5.0 | 18.991 | O | 1 |
| A13829 | 18.0 | 37.0 | 40.0 | 5.0 | 18.849 | O | 1 |
| A13830 | 15.0 | 40.0 | 40.0 | 5.0 | 17.778 | O | 1 |
| A13831 | 10.0 | 45.0 | 40.0 | 5.0 | 15.994 | O | 1 |
| A13832 | 9.0 | 46.0 | 40.0 | 5.0 | 15.637 | O | 1 |
| A13833 | 8.0 | 47.0 | 40.0 | 5.0 | 15.280 | O | 1 |
| A13834 | 7.0 | 48.0 | 40.0 | 5.0 | 14.924 | O | 1 |
| A13835 | 6.0 | 49.0 | 40.0 | 5.0 | 14.513 | O | 1 |
| A13836 | 5.0 | 50.0 | 40.0 | 5.0 | 14.095 | O | 1 |
| A13837 | 4.0 | 51.0 | 40.0 | 5.0 | 13.677 | O | 1 |
| A13838 | 3.0 | 52.0 | 40.0 | 5.0 | 13.259 | O | 1 |
| A13839 | 2.0 | 53.0 | 40.0 | 5.0 | 12.841 | O | 1 |
| A13840 | 1.0 | 54.0 | 40.0 | 5.0 | 12.423 | O | 1 |
| A13841 | 0.0 | 55.0 | 40.0 | 5.0 | 12.005 | O | 1 |
| A13842 | 17.0 | 28.0 | 50.0 | 5.0 | 19.052 | X | 1 |
| A13843 | 16.9 | 28.1 | 50.0 | 5.0 | 19.016 | X | 1 |
| A13844 | 16.8 | 28.2 | 50.0 | 5.0 | 18.980 | O | 1 |
| A13845 | 16.0 | 29.0 | 50.0 | 5.0 | 18.695 | O | 1 |
| A13846 | 15.0 | 30.0 | 50.0 | 5.0 | 18.338 | O | 1 |
| A13847 | 10.0 | 35.0 | 50.0 | 5.0 | 16.554 | O | 1 |
| A13848 | 9.0 | 36.0 | 50.0 | 5.0 | 16.197 | O | 1 |
| A13849 | 8.0 | 37.0 | 50.0 | 5.0 | 15.840 | O | 1 |
| A13850 | 7.0 | 38.0 | 50.0 | 5.0 | 15.484 | O | 1 |
| A13851 | 6.0 | 39.0 | 50.0 | 5.0 | 15.127 | O | 1 |
| A13852 | 5.0 | 40.0 | 50.0 | 5.0 | 14.727 | O | 1 |
| A13853 | 4.0 | 41.0 | 50.0 | 5.0 | 14.309 | O | 1 |
| A13854 | 3.0 | 42.0 | 50.0 | 5.0 | 13.891 | O | 1 |
| A13855 | 2.0 | 43.0 | 50.0 | 5.0 | 13.473 | O | 1 |
| A13856 | 1.0 | 44.0 | 50.0 | 5.0 | 13.055 | O | 1 |
| A13857 | 0.0 | 45.0 | 50.0 | 5.0 | 12.637 | O | 1 |
| A13858 | 16.0 | 19.0 | 60.0 | 5.0 | 19.255 | X | 1 |
| A13859 | 15.3 | 19.7 | 60.0 | 5.0 | 19.005 | X | 1 |
| A13860 | 15.2 | 19.8 | 60.0 | 5.0 | 18.969 | O | 1 |
| A13861 | 15.0 | 20.0 | 60.0 | 5.0 | 18.898 | O | 1 |
| A13862 | 10.0 | 25.0 | 60.0 | 5.0 | 17.114 | O | 1 |
| A13863 | 9.0 | 26.0 | 60.0 | 5.0 | 16.757 | O | 1 |
| A13864 | 8.0 | 27.0 | 60.0 | 5.0 | 16.400 | O | 1 |
| A13865 | 7.0 | 28.0 | 60.0 | 5.0 | 16.043 | O | 1 |
| A13866 | 6.0 | 29.0 | 60.0 | 5.0 | 15.687 | O | 1 |
| A13867 | 5.0 | 30.0 | 60.0 | 5.0 | 15.330 | O | 1 |
| A13868 | 4.0 | 31.0 | 60.0 | 5.0 | 14.941 | O | 1 |
| A13869 | 3.0 | 32.0 | 60.0 | 5.0 | 14.523 | O | 1 |
| A13870 | 2.0 | 33.0 | 60.0 | 5.0 | 14.105 | O | 1 |
| A13871 | 1.0 | 34.0 | 60.0 | 5.0 | 13.687 | O | 1 |
| A13872 | 0.0 | 35.0 | 60.0 | 5.0 | 13.270 | O | 1 |
| A13873 | 14.0 | 11.0 | 70.0 | 5.0 | 19.101 | X | 1 |
| A13874 | 13.8 | 11.2 | 70.0 | 5.0 | 19.030 | X | 1 |
| A13875 | 13.7 | 11.3 | 70.0 | 5.0 | 18.994 | O | 1 |
| A13876 | 13.0 | 12.0 | 70.0 | 5.0 | 18.744 | O | 1 |

[Table 495]

| | | | | | | | |
|---|---|---|---|---|---|---|---|
| A13877 | 10.0 | 15.0 | 70.0 | 5.0 | 17.674 | O | 1 |
| A13878 | 9.0 | 16.0 | 70.0 | 5.0 | 17.317 | O | 1 |
| A13879 | 8.0 | 17.0 | 70.0 | 5.0 | 16.960 | O | 1 |
| A13880 | 7.0 | 18.0 | 70.0 | 5.0 | 16.603 | O | 1 |
| A13881 | 6.0 | 19.0 | 70.0 | 5.0 | 16.246 | O | 1 |
| A13882 | 5.0 | 20.0 | 70.0 | 5.0 | 15.890 | O | 1 |
| A13883 | 4.0 | 21.0 | 70.0 | 5.0 | 15.533 | O | 1 |
| A13884 | 3.0 | 22.0 | 70.0 | 5.0 | 15.156 | O | 1 |
| A13885 | 2.0 | 23.0 | 70.0 | 5.0 | 14.738 | O | 1 |
| A13886 | 1.0 | 24.0 | 70.0 | 5.0 | 14.320 | O | 1 |
| A13887 | 0.0 | 25.0 | 70.0 | 5.0 | 13.902 | O | 1 |
| A13888 | 13.0 | 2.0 | 80.0 | 5.0 | 19.304 | X | 1 |
| A13889 | 12.2 | 2.8 | 80.0 | 5.0 | 19.018 | X | 1 |
| A13890 | 12.1 | 2.9 | 80.0 | 5.0 | 18.983 | O | 1 |
| A13891 | 12.0 | 3.0 | 80.0 | 5.0 | 18.947 | O | 1 |
| A13892 | 10.0 | 5.0 | 80.0 | 5.0 | 18.233 | O | 1 |
| A13893 | 9.0 | 6.0 | 80.0 | 5.0 | 17.877 | O | 1 |
| A13894 | 8.0 | 7.0 | 80.0 | 5.0 | 17.520 | O | 1 |
| A13895 | 7.0 | 8.0 | 80.0 | 5.0 | 17.163 | O | 1 |
| A13896 | 6.0 | 9.0 | 80.0 | 5.0 | 16.806 | O | 1 |
| A13897 | 5.0 | 10.0 | 80.0 | 5.0 | 16.449 | O | 1 |
| A13898 | 4.0 | 11.0 | 80.0 | 5.0 | 16.093 | O | 1 |
| A13899 | 3.0 | 12.0 | 80.0 | 5.0 | 15.736 | O | 1 |
| A13900 | 2.0 | 13.0 | 80.0 | 5.0 | 15.370 | O | 1 |
| A13901 | 1.0 | 14.0 | 80.0 | 5.0 | 14.952 | O | 1 |
| A13902 | 0.0 | 15.0 | 80.0 | 5.0 | 14.534 | O | 1 |
| A13903 | 25.0 | 55.0 | 10.0 | 10.0 | 19.201 | X | 1 |
| A13904 | 24.5 | 55.5 | 10.0 | 10.0 | 19.022 | X | 1 |
| A13905 | 24.4 | 55.6 | 10.0 | 10.0 | 18.987 | O | 1 |
| A13906 | 24.0 | 56.0 | 10.0 | 10.0 | 18.844 | O | 1 |
| A13907 | 20.0 | 60.0 | 10.0 | 10.0 | 17.417 | O | 1 |
| A13908 | 15.0 | 65.0 | 10.0 | 10.0 | 15.633 | O | 1 |
| A13909 | 10.0 | 70.0 | 10.0 | 10.0 | 13.835 | O | 1 |
| A13910 | 9.0 | 71.0 | 10.0 | 10.0 | 13.417 | O | 1 |
| A13911 | 8.0 | 72.0 | 10.0 | 10.0 | 12.999 | O | 1 |
| A13912 | 7.0 | 73.0 | 10.0 | 10.0 | 12.581 | O | 1 |
| A13913 | 6.0 | 74.0 | 10.0 | 10.0 | 12.163 | O | 1 |
| A13914 | 5.0 | 75.0 | 10.0 | 10.0 | 11.745 | O | 1 |
| A13915 | 4.0 | 76.0 | 10.0 | 10.0 | 11.327 | O | 1 |
| A13916 | 3.0 | 77.0 | 10.0 | 10.0 | 10.910 | O | 1 |
| A13917 | 2.0 | 78.0 | 10.0 | 10.0 | 10.492 | O | 1 |
| A13918 | 1.0 | 79.0 | 10.0 | 10.0 | 10.074 | O | 1 |
| A13919 | 0.0 | 80.0 | 10.0 | 10.0 | 9.656 | O | 1 |
| A13920 | 23.0 | 47.0 | 20.0 | 10.0 | 19.047 | X | 1 |
| A13921 | 22.9 | 47.1 | 20.0 | 10.0 | 19.011 | X | 1 |
| A13922 | 22.8 | 47.2 | 20.0 | 10.0 | 18.976 | O | 1 |
| A13923 | 22.0 | 48.0 | 20.0 | 10.0 | 18.690 | O | 1 |
| A13924 | 20.0 | 50.0 | 20.0 | 10.0 | 17.976 | O | 1 |
| A13925 | 15.0 | 55.0 | 20.0 | 10.0 | 16.192 | O | 1 |
| A13926 | 10.0 | 60.0 | 20.0 | 10.0 | 14.408 | O | 1 |

[Table 496]

| | | | | | | | |
|---|---|---|---|---|---|---|---|
| A13927 | 9.0 | 61.0 | 20.0 | 10.0 | 14.049 | O | 1 |
| A13928 | 8.0 | 62.0 | 20.0 | 10.0 | 13.631 | O | 1 |
| A13929 | 7.0 | 63.0 | 20.0 | 10.0 | 13.213 | O | 1 |
| A13930 | 6.0 | 64.0 | 20.0 | 10.0 | 12.796 | O | 1 |
| A13931 | 5.0 | 65.0 | 20.0 | 10.0 | 12.378 | O | 1 |
| A13932 | 4.0 | 66.0 | 20.0 | 10.0 | 11.960 | O | 1 |
| A13933 | 3.0 | 67.0 | 20.0 | 10.0 | 11.542 | O | 1 |
| A13934 | 2.0 | 68.0 | 20.0 | 10.0 | 11.124 | O | 1 |
| A13935 | 1.0 | 69.0 | 20.0 | 10.0 | 10.706 | O | 1 |
| A13936 | 0.0 | 70.0 | 20.0 | 10.0 | 10.288 | O | 1 |
| A13937 | 22.0 | 38.0 | 30.0 | 10.0 | 19.250 | X | 1 |
| A13938 | 21.3 | 38.7 | 30.0 | 10.0 | 19.000 | X | 1 |
| A13939 | 21.2 | 38.8 | 30.0 | 10.0 | 18.965 | O | 1 |
| A13940 | 21.0 | 39.0 | 30.0 | 10.0 | 18.893 | O | 1 |
| A13941 | 20.0 | 40.0 | 30.0 | 10.0 | 18.536 | O | 1 |
| A13942 | 15.0 | 45.0 | 30.0 | 10.0 | 16.752 | O | 1 |
| A13943 | 10.0 | 50.0 | 30.0 | 10.0 | 14.968 | O | 1 |
| A13944 | 9.0 | 51.0 | 30.0 | 10.0 | 14.611 | O | 1 |
| A13945 | 8.0 | 52.0 | 30.0 | 10.0 | 14.255 | O | 1 |
| A13946 | 7.0 | 53.0 | 30.0 | 10.0 | 13.846 | O | 1 |
| A13947 | 6.0 | 54.0 | 30.0 | 10.0 | 13.428 | O | 1 |
| A13948 | 5.0 | 55.0 | 30.0 | 10.0 | 13.010 | O | 1 |
| A13949 | 4.0 | 56.0 | 30.0 | 10.0 | 12.592 | O | 1 |
| A13950 | 3.0 | 57.0 | 30.0 | 10.0 | 12.174 | O | 1 |
| A13951 | 2.0 | 58.0 | 30.0 | 10.0 | 11.756 | O | 1 |
| A13952 | 1.0 | 59.0 | 30.0 | 10.0 | 11.338 | O | 1 |
| A13953 | 0.0 | 60.0 | 30.0 | 10.0 | 10.920 | O | 1 |
| A13954 | 20.0 | 30.0 | 40.0 | 10.0 | 19.096 | X | 1 |
| A13955 | 19.8 | 30.2 | 40.0 | 10.0 | 19.025 | X | 1 |
| A13956 | 19.7 | 30.3 | 40.0 | 10.0 | 18.989 | O | 1 |
| A13957 | 19.0 | 31.0 | 40.0 | 10.0 | 18.739 | O | 1 |
| A13958 | 15.0 | 35.0 | 40.0 | 10.0 | 17.312 | O | 1 |
| A13959 | 10.0 | 40.0 | 40.0 | 10.0 | 15.528 | O | 1 |
| A13960 | 9.0 | 41.0 | 40.0 | 10.0 | 15.171 | O | 1 |
| A13961 | 8.0 | 42.0 | 40.0 | 10.0 | 14.814 | O | 1 |
| A13962 | 7.0 | 43.0 | 40.0 | 10.0 | 14.458 | O | 1 |
| A13963 | 6.0 | 44.0 | 40.0 | 10.0 | 14.060 | O | 1 |
| A13964 | 5.0 | 45.0 | 40.0 | 10.0 | 13.642 | O | 1 |
| A13965 | 4.0 | 46.0 | 40.0 | 10.0 | 13.224 | O | 1 |
| A13966 | 3.0 | 47.0 | 40.0 | 10.0 | 12.806 | O | 1 |
| A13967 | 2.0 | 48.0 | 40.0 | 10.0 | 12.388 | O | 1 |
| A13968 | 1.0 | 49.0 | 40.0 | 10.0 | 11.970 | O | 1 |
| A13969 | 0.0 | 50.0 | 40.0 | 10.0 | 11.552 | O | 1 |
| A13970 | 19.0 | 21.0 | 50.0 | 10.0 | 19.299 | X | 1 |
| A13971 | 18.2 | 21.8 | 50.0 | 10.0 | 19.014 | X | 1 |
| A13972 | 18.1 | 21.9 | 50.0 | 10.0 | 18.978 | O | 1 |
| A13973 | 18.0 | 22.0 | 50.0 | 10.0 | 18.942 | O | 1 |
| A13974 | 15.0 | 25.0 | 50.0 | 10.0 | 17.872 | O | 1 |
| A13975 | 10.0 | 30.0 | 50.0 | 10.0 | 16.088 | O | 1 |
| A13976 | 9.0 | 31.0 | 50.0 | 10.0 | 15.731 | O | 1 |

[Table 497]

| | | | | | | | |
|---|---|---|---|---|---|---|---|
| A13977 | 8.0 | 32.0 | 50.0 | 10.0 | 15.374 | O | 1 |
| A13978 | 7.0 | 33.0 | 50.0 | 10.0 | 15.017 | O | 1 |
| A13979 | 6.0 | 34.0 | 50.0 | 10.0 | 14.661 | O | 1 |
| A13980 | 5.0 | 35.0 | 50.0 | 10.0 | 14.274 | O | 1 |
| A13981 | 4.0 | 36.0 | 50.0 | 10.0 | 13.856 | O | 1 |
| A13982 | 3.0 | 37.0 | 50.0 | 10.0 | 13.438 | O | 1 |
| A13983 | 2.0 | 38.0 | 50.0 | 10.0 | 13.021 | O | 1 |
| A13984 | 1.0 | 39.0 | 50.0 | 10.0 | 12.603 | O | 1 |
| A13985 | 0.0 | 40.0 | 50.0 | 10.0 | 12.185 | O | 1 |
| A13986 | 17.0 | 13.0 | 60.0 | 10.0 | 19.145 | X | 1 |
| A13987 | 16.6 | 13.4 | 60.0 | 10.0 | 19.003 | X | 1 |
| A13988 | 16.5 | 13.5 | 60.0 | 10.0 | 18.967 | O | 1 |
| A13989 | 16.0 | 14.0 | 60.0 | 10.0 | 18.789 | O | 1 |
| A13990 | 15.0 | 15.0 | 60.0 | 10.0 | 18.432 | O | 1 |
| A13991 | 10.0 | 20.0 | 60.0 | 10.0 | 16.648 | O | 1 |
| A13992 | 9.0 | 21.0 | 60.0 | 10.0 | 16.291 | O | 1 |
| A13993 | 8.0 | 22.0 | 60.0 | 10.0 | 15.934 | O | 1 |
| A13994 | 7.0 | 23.0 | 60.0 | 10.0 | 15.577 | O | 1 |
| A13995 | 6.0 | 24.0 | 60.0 | 10.0 | 15.220 | O | 1 |
| A13996 | 5.0 | 25.0 | 60.0 | 10.0 | 14.864 | O | 1 |
| A13997 | 4.0 | 26.0 | 60.0 | 10.0 | 14.489 | O | 1 |
| A13998 | 3.0 | 27.0 | 60.0 | 10.0 | 14.071 | O | 1 |
| A13999 | 2.0 | 28.0 | 60.0 | 10.0 | 13.653 | O | 1 |
| A14000 | 1.0 | 29.0 | 60.0 | 10.0 | 13.235 | O | 1 |
| A14001 | 0.0 | 30.0 | 60.0 | 10.0 | 12.817 | O | 1 |
| A14002 | 16.0 | 4.0 | 70.0 | 10.0 | 19.348 | X | 1 |
| A14003 | 15.1 | 4.9 | 70.0 | 10.0 | 19.027 | X | 1 |
| A14004 | 15.0 | 5.0 | 70.0 | 10.0 | 18.992 | O | 1 |
| A14005 | 10.0 | 10.0 | 70.0 | 10.0 | 17.208 | O | 1 |
| A14006 | 9.0 | 11.0 | 70.0 | 10.0 | 16.851 | O | 1 |
| A14007 | 8.0 | 12.0 | 70.0 | 10.0 | 16.494 | O | 1 |
| A14008 | 7.0 | 13.0 | 70.0 | 10.0 | 16.137 | O | 1 |
| A14009 | 6.0 | 14.0 | 70.0 | 10.0 | 15.780 | O | 1 |
| A14010 | 5.0 | 15.0 | 70.0 | 10.0 | 15.423 | O | 1 |
| A14011 | 4.0 | 16.0 | 70.0 | 10.0 | 15.067 | O | 1 |
| A14012 | 3.0 | 17.0 | 70.0 | 10.0 | 14.703 | O | 1 |
| A14013 | 2.0 | 18.0 | 70.0 | 10.0 | 14.285 | O | 1 |
| A14014 | 1.0 | 19.0 | 70.0 | 10.0 | 13.867 | O | 1 |
| A14015 | 0.0 | 20.0 | 70.0 | 10.0 | 13.449 | O | 1 |
| A14016 | 28.0 | 42.0 | 10.0 | 20.0 | 19.339 | X | 1 |
| A14017 | 27.1 | 42.9 | 10.0 | 20.0 | 19.018 | X | 1 |
| A14018 | 27.0 | 43.0 | 10.0 | 20.0 | 18.982 | O | 1 |
| A14019 | 20.0 | 50.0 | 10.0 | 20.0 | 16.484 | O | 1 |
| A14020 | 15.0 | 55.0 | 10.0 | 20.0 | 14.700 | O | 1 |
| A14021 | 10.0 | 60.0 | 10.0 | 20.0 | 12.916 | O | 1 |
| A14022 | 9.0 | 61.0 | 10.0 | 20.0 | 12.512 | O | 1 |
| A14023 | 8.0 | 62.0 | 10.0 | 20.0 | 12.094 | O | 1 |
| A14024 | 7.0 | 63.0 | 10.0 | 20.0 | 11.676 | O | 1 |
| A14025 | 6.0 | 64.0 | 10.0 | 20.0 | 11.258 | O | 1 |
| A14026 | 5.0 | 65.0 | 10.0 | 20.0 | 10.840 | O | 1 |

[Table 498]

| | | | | | | | |
|---|---|---|---|---|---|---|---|
| A14027 | 4.0 | 66.0 | 10.0 | 20.0 | 10.422 | O | 1 |
| A14028 | 3.0 | 67.0 | 10.0 | 20.0 | 10.004 | O | 1 |
| A14029 | 2.0 | 68.0 | 10.0 | 20.0 | 9.586 | O | 1 |
| A14030 | 1.0 | 69.0 | 10.0 | 20.0 | 9.168 | O | 1 |
| A14031 | 0.0 | 70.0 | 10.0 | 20.0 | 8.751 | O | 1 |
| A14032 | 26.0 | 34.0 | 20.0 | 20.0 | 19.185 | X | 1 |
| A14033 | 25.5 | 34.5 | 20.0 | 20.0 | 19.007 | X | 1 |
| A14034 | 25.4 | 34.6 | 20.0 | 20.0 | 18.971 | O | 1 |
| A14035 | 25.0 | 35.0 | 20.0 | 20.0 | 18.828 | O | 1 |
| A14036 | 20.0 | 40.0 | 20.0 | 20.0 | 17.044 | O | 1 |
| A14037 | 15.0 | 45.0 | 20.0 | 20.0 | 15.260 | O | 1 |
| A14038 | 10.0 | 50.0 | 20.0 | 20.0 | 13.476 | O | 1 |
| A14039 | 9.0 | 51.0 | 20.0 | 20.0 | 13.119 | O | 1 |
| A14040 | 8.0 | 52.0 | 20.0 | 20.0 | 12.726 | O | 1 |
| A14041 | 7.0 | 53.0 | 20.0 | 20.0 | 12.308 | O | 1 |
| A14042 | 6.0 | 54.0 | 20.0 | 20.0 | 11.890 | O | 1 |
| A14043 | 5.0 | 55.0 | 20.0 | 20.0 | 11.472 | O | 1 |
| A14044 | 4.0 | 56.0 | 20.0 | 20.0 | 11.054 | O | 1 |
| A14045 | 3.0 | 57.0 | 20.0 | 20.0 | 10.636 | O | 1 |
| A14046 | 2.0 | 58.0 | 20.0 | 20.0 | 10.219 | O | 1 |
| A14047 | 1.0 | 59.0 | 20.0 | 20.0 | 9.801 | O | 1 |
| A14048 | 0.0 | 60.0 | 20.0 | 20.0 | 9.383 | O | 1 |
| A14049 | 24.0 | 26.0 | 30.0 | 20.0 | 19.031 | X | 1 |
| A14050 | 23.9 | 26.1 | 30.0 | 20.0 | 18.996 | O | 1 |
| A14051 | 23.0 | 27.0 | 30.0 | 20.0 | 18.675 | O | 1 |
| A14052 | 20.0 | 30.0 | 30.0 | 20.0 | 17.604 | O | 1 |
| A14053 | 15.0 | 35.0 | 30.0 | 20.0 | 15.820 | O | 1 |
| A14054 | 10.0 | 40.0 | 30.0 | 20.0 | 14.036 | O | 1 |
| A14055 | 9.0 | 41.0 | 30.0 | 20.0 | 13.679 | O | 1 |
| A14056 | 8.0 | 42.0 | 30.0 | 20.0 | 13.322 | O | 1 |
| A14057 | 7.0 | 43.0 | 30.0 | 20.0 | 12.940 | O | 1 |
| A14058 | 6.0 | 44.0 | 30.0 | 20.0 | 12.522 | O | 1 |
| A14059 | 5.0 | 45.0 | 30.0 | 20.0 | 12.105 | O | 1 |
| A14060 | 4.0 | 46.0 | 30.0 | 20.0 | 11.687 | O | 1 |
| A14061 | 3.0 | 47.0 | 30.0 | 20.0 | 11.269 | O | 1 |
| A14062 | 2.0 | 48.0 | 30.0 | 20.0 | 10.851 | O | 1 |
| A14063 | 1.0 | 49.0 | 30.0 | 20.0 | 10.433 | O | 1 |
| A14064 | 0.0 | 50.0 | 30.0 | 20.0 | 10.015 | O | 1 |
| A14065 | 23.0 | 17.0 | 40.0 | 20.0 | 19.234 | X | 1 |
| A14066 | 22.4 | 17.6 | 40.0 | 20.0 | 19.020 | X | 1 |
| A14067 | 22.3 | 17.7 | 40.0 | 20.0 | 18.985 | O | 1 |
| A14068 | 22.0 | 18.0 | 40.0 | 20.0 | 18.878 | O | 1 |
| A14069 | 20.0 | 20.0 | 40.0 | 20.0 | 18.164 | O | 1 |
| A14070 | 15.0 | 25.0 | 40.0 | 20.0 | 16.380 | O | 1 |
| A14071 | 10.0 | 30.0 | 40.0 | 20.0 | 14.596 | O | 1 |
| A14072 | 9.0 | 31.0 | 40.0 | 20.0 | 14.239 | O | 1 |
| A14073 | 8.0 | 32.0 | 40.0 | 20.0 | 13.882 | O | 1 |
| A14074 | 7.0 | 33.0 | 40.0 | 20.0 | 13.525 | O | 1 |
| A14075 | 6.0 | 34.0 | 40.0 | 20.0 | 13.155 | O | 1 |
| A14076 | 5.0 | 35.0 | 40.0 | 20.0 | 12.737 | O | 1 |

[Table 499]

| A14077 | 4.0 | 36.0 | 40.0 | 20.0 | 12.319 | O | 1 |
|---|---|---|---|---|---|---|---|
| A14078 | 3.0 | 37.0 | 40.0 | 20.0 | 11.901 | O | 1 |
| A14079 | 2.0 | 38.0 | 40.0 | 20.0 | 11.483 | O | 1 |
| A14080 | 1.0 | 39.0 | 40.0 | 20.0 | 11.065 | O | 1 |
| A14081 | 0.0 | 40.0 | 40.0 | 20.0 | 10.647 | O | 1 |
| A14082 | 21.0 | 9.0 | 50.0 | 20.0 | 19.081 | X | 1 |
| A14083 | 20.8 | 9.2 | 50.0 | 20.0 | 19.009 | X | 1 |
| A14084 | 20.7 | 9.3 | 50.0 | 20.0 | 18.974 | O | 1 |
| A14085 | 20.0 | 10.0 | 50.0 | 20.0 | 18.724 | O | 1 |
| A14086 | 15.0 | 15.0 | 50.0 | 20.0 | 16.940 | O | 1 |
| A14087 | 10.0 | 20.0 | 50.0 | 20.0 | 15.156 | O | 1 |
| A14088 | 9.0 | 21.0 | 50.0 | 20.0 | 14.799 | O | 1 |
| A14089 | 8.0 | 22.0 | 50.0 | 20.0 | 14.442 | O | 1 |
| A14090 | 7.0 | 23.0 | 50.0 | 20.0 | 14.085 | O | 1 |
| A14091 | 6.0 | 24.0 | 50.0 | 20.0 | 13.728 | O | 1 |
| A14092 | 5.0 | 25.0 | 50.0 | 20.0 | 13.369 | O | 1 |
| A14093 | 4.0 | 26.0 | 50.0 | 20.0 | 12.951 | O | 1 |
| A14094 | 3.0 | 27.0 | 50.0 | 20.0 | 12.533 | O | 1 |
| A14095 | 2.0 | 28.0 | 50.0 | 20.0 | 12.115 | O | 1 |
| A14096 | 1.0 | 29.0 | 50.0 | 20.0 | 11.697 | O | 1 |
| A14097 | 0.0 | 30.0 | 50.0 | 20.0 | 11.279 | O | 1 |
| A14098 | 20.0 | 0.0 | 60.0 | 20.0 | 19.284 | X | 1 |
| A14099 | 19.3 | 0.7 | 60.0 | 20.0 | 19.034 | X | 1 |
| A14100 | 19.2 | 0.8 | 60.0 | 20.0 | 18.998 | O | 1 |
| A14101 | 19.0 | 1.0 | 60.0 | 20.0 | 18.927 | O | 1 |
| A14102 | 15.0 | 5.0 | 60.0 | 20.0 | 17.500 | O | 1 |
| A14103 | 10.0 | 10.0 | 60.0 | 20.0 | 15.716 | O | 1 |
| A14104 | 9.0 | 11.0 | 60.0 | 20.0 | 15.359 | O | 1 |
| A14105 | 8.0 | 12.0 | 60.0 | 20.0 | 15.002 | O | 1 |
| A14106 | 7.0 | 13.0 | 60.0 | 20.0 | 14.645 | O | 1 |
| A14107 | 6.0 | 14.0 | 60.0 | 20.0 | 14.288 | O | 1 |
| A14108 | 5.0 | 15.0 | 60.0 | 20.0 | 13.931 | O | 1 |
| A14109 | 4.0 | 16.0 | 60.0 | 20.0 | 13.575 | O | 1 |
| A14110 | 3.0 | 17.0 | 60.0 | 20.0 | 13.165 | O | 1 |
| A14111 | 2.0 | 18.0 | 60.0 | 20.0 | 12.747 | O | 1 |
| A14112 | 1.0 | 19.0 | 60.0 | 20.0 | 12.330 | O | 1 |
| A14113 | 0.0 | 20.0 | 60.0 | 20.0 | 11.912 | O | 1 |
| A14114 | 30.0 | 30.0 | 10.0 | 30.0 | 19.120 | X | 1 |
| A14115 | 29.7 | 30.3 | 10.0 | 30.0 | 19.013 | X | 1 |
| A14116 | 29.6 | 30.4 | 10.0 | 30.0 | 18.978 | O | 1 |
| A14117 | 29.0 | 31.0 | 10.0 | 30.0 | 18.764 | O | 1 |
| A14118 | 20.0 | 40.0 | 10.0 | 30.0 | 15.552 | O | 1 |
| A14119 | 15.0 | 45.0 | 10.0 | 30.0 | 13.768 | O | 1 |
| A14120 | 10.0 | 50.0 | 10.0 | 30.0 | 11.984 | O | 1 |
| A14121 | 9.0 | 51.0 | 10.0 | 30.0 | 11.607 | O | 1 |
| A14122 | 8.0 | 52.0 | 10.0 | 30.0 | 11.189 | O | 1 |
| A14123 | 7.0 | 53.0 | 10.0 | 30.0 | 10.771 | O | 1 |
| A14124 | 6.0 | 54.0 | 10.0 | 30.0 | 10.353 | O | 1 |
| A14125 | 5.0 | 55.0 | 10.0 | 30.0 | 9.935 | O | 1 |
| A14126 | 4.0 | 56.0 | 10.0 | 30.0 | 9.517 | O | 1 |

[Table 500]

| A14127 | 3.0 | 57.0 | 10.0 | 30.0 | 9.099 | O | 1 |
| A14128 | 2.0 | 58.0 | 10.0 | 30.0 | 8.681 | O | 1 |
| A14129 | 1.0 | 59.0 | 10.0 | 30.0 | 8.263 | O | 1 |
| A14130 | 0.0 | 60.0 | 10.0 | 30.0 | 7.845 | O | 1 |
| A14131 | 29.0 | 21.0 | 20.0 | 30.0 | 19.323 | X | 1 |
| A14132 | 28.1 | 21.9 | 20.0 | 30.0 | 19.002 | X | 1 |
| A14133 | 28.0 | 22.0 | 20.0 | 30.0 | 18.967 | O | 1 |
| A14134 | 20.0 | 30.0 | 20.0 | 30.0 | 16.112 | O | 1 |
| A14135 | 15.0 | 35.0 | 20.0 | 30.0 | 14.328 | O | 1 |
| A14136 | 10.0 | 40.0 | 20.0 | 30.0 | 12.544 | O | 1 |
| A14137 | 9.0 | 41.0 | 20.0 | 30.0 | 12.187 | O | 1 |
| A14138 | 8.0 | 42.0 | 20.0 | 30.0 | 11.821 | O | 1 |
| A14139 | 7.0 | 43.0 | 20.0 | 30.0 | 11.403 | O | 1 |
| A14140 | 6.0 | 44.0 | 20.0 | 30.0 | 10.985 | O | 1 |
| A14141 | 5.0 | 45.0 | 20.0 | 30.0 | 10.567 | O | 1 |
| A14142 | 4.0 | 46.0 | 20.0 | 30.0 | 10.149 | O | 1 |
| A14143 | 3.0 | 47.0 | 20.0 | 30.0 | 9.731 | O | 1 |
| A14144 | 2.0 | 48.0 | 20.0 | 30.0 | 9.313 | O | 1 |
| A14145 | 1.0 | 49.0 | 20.0 | 30.0 | 8.895 | O | 1 |
| A14146 | 0.0 | 50.0 | 20.0 | 30.0 | 8.477 | O | 1 |
| A14147 | 27.0 | 13.0 | 30.0 | 30.0 | 19.170 | X | 1 |
| A14148 | 26.6 | 13.4 | 30.0 | 30.0 | 19.027 | X | 1 |
| A14149 | 26.5 | 13.5 | 30.0 | 30.0 | 18.991 | O | 1 |
| A14150 | 26.0 | 14.0 | 30.0 | 30.0 | 18.813 | O | 1 |
| A14151 | 20.0 | 20.0 | 30.0 | 30.0 | 16.672 | O | 1 |
| A14152 | 15.0 | 25.0 | 30.0 | 30.0 | 14.888 | O | 1 |
| A14153 | 10.0 | 30.0 | 30.0 | 30.0 | 13.104 | O | 1 |
| A14154 | 9.0 | 31.0 | 30.0 | 30.0 | 12.747 | O | 1 |
| A14155 | 8.0 | 32.0 | 30.0 | 30.0 | 12.390 | O | 1 |
| A14156 | 7.0 | 33.0 | 30.0 | 30.0 | 12.033 | O | 1 |
| A14157 | 6.0 | 34.0 | 30.0 | 30.0 | 11.617 | O | 1 |
| A14158 | 5.0 | 35.0 | 30.0 | 30.0 | 11.199 | O | 1 |
| A14159 | 4.0 | 36.0 | 30.0 | 30.0 | 10.781 | O | 1 |
| A14160 | 3.0 | 37.0 | 30.0 | 30.0 | 10.363 | O | 1 |
| A14161 | 2.0 | 38.0 | 30.0 | 30.0 | 9.946 | O | 1 |
| A14162 | 1.0 | 39.0 | 30.0 | 30.0 | 9.528 | O | 1 |
| A14163 | 0.0 | 40.0 | 30.0 | 30.0 | 9.110 | O | 1 |
| A14164 | 25.0 | 5.0 | 40.0 | 30.0 | 19.016 | X | 1 |
| A14165 | 24.9 | 5.1 | 40.0 | 30.0 | 18.980 | O | 1 |
| A14166 | 24.0 | 6.0 | 40.0 | 30.0 | 18.659 | O | 1 |
| A14167 | 20.0 | 10.0 | 40.0 | 30.0 | 17.232 | O | 1 |
| A14168 | 15.0 | 15.0 | 40.0 | 30.0 | 15.448 | O | 1 |
| A14169 | 10.0 | 20.0 | 40.0 | 30.0 | 13.664 | O | 1 |
| A14170 | 9.0 | 21.0 | 40.0 | 30.0 | 13.307 | O | 1 |
| A14171 | 8.0 | 22.0 | 40.0 | 30.0 | 12.950 | O | 1 |
| A14172 | 7.0 | 23.0 | 40.0 | 30.0 | 12.593 | O | 1 |
| A14173 | 6.0 | 24.0 | 40.0 | 30.0 | 12.236 | O | 1 |
| A14174 | 5.0 | 25.0 | 40.0 | 30.0 | 11.832 | O | 1 |
| A14175 | 4.0 | 26.0 | 40.0 | 30.0 | 11.414 | O | 1 |
| A14176 | 3.0 | 27.0 | 40.0 | 30.0 | 10.996 | O | 1 |

[Table 501]

| | | | | | | | |
|---|---|---|---|---|---|---|---|
| A14177 | 2.0 | 28.0 | 40.0 | 30.0 | 10.578 | O | 1 |
| A14178 | 1.0 | 29.0 | 40.0 | 30.0 | 10.160 | O | 1 |
| A14179 | 0.0 | 30.0 | 40.0 | 30.0 | 9.742 | O | 1 |
| A14180 | 33.0 | 17.0 | 10.0 | 40.0 | 19.259 | X | 1 |
| A14181 | 32.3 | 17.7 | 10.0 | 40.0 | 19.009 | X | 1 |
| A14182 | 32.2 | 17.8 | 10.0 | 40.0 | 18.973 | O | 1 |
| A14183 | 32.0 | 18.0 | 10.0 | 40.0 | 18.902 | O | 1 |
| A14184 | 30.0 | 20.0 | 10.0 | 40.0 | 18.188 | O | 1 |
| A14185 | 20.0 | 30.0 | 10.0 | 40.0 | 14.620 | O | 1 |
| A14186 | 15.0 | 35.0 | 10.0 | 40.0 | 12.836 | O | 1 |
| A14187 | 10.0 | 40.0 | 10.0 | 40.0 | 11.052 | O | 1 |
| A14188 | 9.0 | 41.0 | 10.0 | 40.0 | 10.695 | O | 1 |
| A14189 | 8.0 | 42.0 | 10.0 | 40.0 | 10.283 | O | 1 |
| A14190 | 7.0 | 43.0 | 10.0 | 40.0 | 9.865 | O | 1 |
| A14191 | 6.0 | 44.0 | 10.0 | 40.0 | 9.447 | O | 1 |
| A14192 | 5.0 | 45.0 | 10.0 | 40.0 | 9.030 | O | 1 |
| A14193 | 4.0 | 46.0 | 10.0 | 40.0 | 8.612 | O | 1 |
| A14194 | 3.0 | 47.0 | 10.0 | 40.0 | 8.194 | O | 1 |
| A14195 | 2.0 | 48.0 | 10.0 | 40.0 | 7.776 | O | 1 |
| A14196 | 1.0 | 49.0 | 10.0 | 40.0 | 7.358 | O | 1 |
| A14197 | 0.0 | 50.0 | 10.0 | 40.0 | 6.940 | O | 1 |
| A14198 | 31.0 | 9.0 | 20.0 | 40.0 | 19.105 | X | 1 |
| A14199 | 30.8 | 9.2 | 20.0 | 40.0 | 19.034 | X | 1 |
| A14200 | 30.7 | 9.3 | 20.0 | 40.0 | 18.998 | O | 1 |
| A14201 | 30.0 | 10.0 | 20.0 | 40.0 | 18.748 | O | 1 |
| A14202 | 20.0 | 20.0 | 20.0 | 40.0 | 15.180 | O | 1 |
| A14203 | 15.0 | 25.0 | 20.0 | 40.0 | 13.396 | O | 1 |
| A14204 | 10.0 | 30.0 | 20.0 | 40.0 | 11.612 | O | 1 |
| A14205 | 9.0 | 31.0 | 20.0 | 40.0 | 11.255 | O | 1 |
| A14206 | 8.0 | 32.0 | 20.0 | 40.0 | 10.898 | O | 1 |
| A14207 | 7.0 | 33.0 | 20.0 | 40.0 | 10.498 | O | 1 |
| A14208 | 6.0 | 34.0 | 20.0 | 40.0 | 10.080 | O | 1 |
| A14209 | 5.0 | 35.0 | 20.0 | 40.0 | 9.662 | O | 1 |
| A14210 | 4.0 | 36.0 | 20.0 | 40.0 | 9.244 | O | 1 |
| A14211 | 3.0 | 37.0 | 20.0 | 40.0 | 8.826 | O | 1 |
| A14212 | 2.0 | 38.0 | 20.0 | 40.0 | 8.408 | O | 1 |
| A14213 | 1.0 | 39.0 | 20.0 | 40.0 | 7.990 | O | 1 |
| A14214 | 0.0 | 40.0 | 20.0 | 40.0 | 7.572 | O | 1 |
| A14215 | 30.0 | 0.0 | 30.0 | 40.0 | 19.308 | X | 1 |
| A14216 | 29.2 | 0.8 | 30.0 | 40.0 | 19.022 | X | 1 |
| A14217 | 29.1 | 0.9 | 30.0 | 40.0 | 18.987 | O | 1 |
| A14218 | 29.0 | 1.0 | 30.0 | 40.0 | 18.951 | O | 1 |
| A14219 | 20.0 | 10.0 | 30.0 | 40.0 | 15.740 | O | 1 |
| A14220 | 15.0 | 15.0 | 30.0 | 40.0 | 13.956 | O | 1 |
| A14221 | 10.0 | 20.0 | 30.0 | 40.0 | 12.172 | O | 1 |
| A14222 | 9.0 | 21.0 | 30.0 | 40.0 | 11.815 | O | 1 |
| A14223 | 8.0 | 22.0 | 30.0 | 40.0 | 11.458 | O | 1 |
| A14224 | 7.0 | 23.0 | 30.0 | 40.0 | 11.101 | O | 1 |
| A14225 | 6.0 | 24.0 | 30.0 | 40.0 | 10.712 | O | 1 |
| A14226 | 5.0 | 25.0 | 30.0 | 40.0 | 10.294 | O | 1 |

[Table 502]

| A14227 | 4.0 | 26.0 | 30.0 | 40.0 | 9.876 | O | 1 |
|---|---|---|---|---|---|---|---|
| A14228 | 3.0 | 27.0 | 30.0 | 40.0 | 9.458 | O | 1 |
| A14229 | 2.0 | 28.0 | 30.0 | 40.0 | 9.040 | O | 1 |
| A14230 | 1.0 | 29.0 | 30.0 | 40.0 | 8.622 | O | 1 |
| A14231 | 0.0 | 30.0 | 30.0 | 40.0 | 8.204 | O | 1 |
| A14232 | 35.0 | 5.0 | 10.0 | 50.0 | 19.040 | X | 1 |
| A14233 | 34.9 | 5.1 | 10.0 | 50.0 | 19.004 | X | 1 |
| A14234 | 34.8 | 5.2 | 10.0 | 50.0 | 18.969 | O | 1 |
| A14235 | 34.0 | 6.0 | 10.0 | 50.0 | 18.683 | O | 1 |
| A14236 | 30.0 | 10.0 | 10.0 | 50.0 | 17.256 | O | 1 |
| A14237 | 20.0 | 20.0 | 10.0 | 50.0 | 13.688 | O | 1 |
| A14238 | 15.0 | 25.0 | 10.0 | 50.0 | 11.904 | O | 1 |
| A14239 | 10.0 | 30.0 | 10.0 | 50.0 | 10.120 | O | 1 |
| A14240 | 9.0 | 31.0 | 10.0 | 50.0 | 9.763 | O | 1 |
| A14241 | 8.0 | 32.0 | 10.0 | 50.0 | 9.378 | O | 1 |
| A14242 | 7.0 | 33.0 | 10.0 | 50.0 | 8.960 | O | 1 |
| A14243 | 6.0 | 34.0 | 10.0 | 50.0 | 8.542 | O | 1 |
| A14244 | 5.0 | 35.0 | 10.0 | 50.0 | 8.124 | O | 1 |
| A14245 | 4.0 | 36.0 | 10.0 | 50.0 | 7.706 | O | 1 |
| A14246 | 3.0 | 37.0 | 10.0 | 50.0 | 7.288 | O | 1 |
| A14247 | 2.0 | 38.0 | 10.0 | 50.0 | 6.871 | O | 1 |
| A14248 | 1.0 | 39.0 | 10.0 | 50.0 | 6.453 | O | 1 |

<Cycle Performance>

Here, cycle performance, which is a property required at the time of applying the working medium to the heat cycle system can be evaluated by the coefficient of performance (also referred to as "COP" in the disclosure) and the capacity per unit volume (suction volume of the compressor) (also referred to as "CAP" in the disclosure). In a case in which the heat cycle system is a refrigerating cycle system, the capacity is a refrigerating capacity. Evaluation items in a case in which the working medium is applied to a refrigerating cycle system further include a temperature gradient in an evaporator (in the disclosure, also referred to as "temperature glide"), a discharge temperature, a condensing pressure, an evaporating pressure, and a pressure loss in addition to the cycle performance. Specifically, using a reference refrigerating cycle under the following temperature conditions, for example, each item is measured by a method described below. For the obtained measured values, as alternative targets, the discharge temperature, the condensing pressure, the evaporating pressure, and the compression ratio are evaluated by being converted into differences and relative values based on the value of HFC-32, and the temperature glide, CAP, COP, and the pressure loss are evaluated by being converted into differences and relative values based on the value of R410A.

(Temperature Conditions of Standard Refrigerating Cycle)

Evaporation temperature; 5°C (in the case of a non-azeotropic mixture, an average temperature of an evaporation initiation temperature and an evaporation completion temperature)
Condensation completion temperature; 40°C (in the case of a non-azeotropic mixture, an average temperature of a condensation initiation temperature and a condensation completion temperature)
Supercooling temperature (SC); 5°C
Superheating temperature (SH); 5°C
Compressor efficiency; 0.7

<Temperature Glide (Temperature Gradient)>

The temperature glide is an index for measuring a difference in composition between the liquid phase and the gas phase in the working medium of the mixture. The temperature glide is defined as the property of the evaporation in a heat exchanger, for example, an evaporator, or the property of the condensation in a condenser, of which the start temperature and the completion temperature are different. In the azeotropic mixed medium, the temperature glide is 0, and the temperature gradient in a pseudo azeotropic mixture such as R410A is extremely close to 0.
In a case in which the temperature glide is large, for example, the inlet temperature in the evaporator decreases, so that the possibility of frosting increases, which is a problem. In the heat cycle system, in order to improve the heat exchange efficiency, it is common to make the working medium flowing through the heat exchanger and a heat source fluid such as water or air counter flow, and since the temperature difference of the heat source fluid is small in a stable operation state, it is difficult to obtain an energy efficient heat cycle system in the case of a non-azeotropic mixture medium having a large temperature glide. Therefore, in a case in which the mixture is used as the working medium, a working medium having an appropriate temperature glide is desired.

The non-azeotropic mixture medium has a problem in that a composition change occurs in a case in which the non-azeotropic mixture medium is filled into a refrigerating and air-conditioning apparatus from a pressure container. In a case in which the refrigerant leaks from the refrigerating and air-conditioning apparatus, the refrigerant composition in the refrigerating and air-conditioning apparatus is very likely to change, and it is difficult to restore the refrigerant composition to the initial state. The above problem can be avoided in the case of an azeotropic or a pseudo azeotropic mixed medium.

<Compression Ratio>

The compression ratio is represented by a condensing pressure Pc (MPa)/the evaporating pressure Pe (MPa) in the refrigerating cycle.

The compression ratio decreases as the condensing pressure in the refrigerating cycle decreases and as the evaporating pressure increases. Since the volumetric efficiency of the compressor increases as the compression ratio decreases, the refrigerant circulation amount increases and the device performance is improved.

In the disclosure, the compression ratio is indicated by a relative compression ratio with respect to HFC-32.

<Critical Temperature>

A critical point is an end point on the high-pressure and high-temperature side of the saturated liquid line and the saturated vapor line. The temperature at this point is a critical temperature. At the critical point or more, there is no evaporation phenomenon or liquefaction phenomenon, there is no distinction between the liquid phase and the gas phase, and there is no phase change.

In a case in which the working medium of the disclosure is used in a refrigerating cycle apparatus, a refrigerant temperature after heat exchange approaches or exceeds a critical temperature on a lower temperature side than the critical temperature under a temperature condition where a temperature of air for cooling a condenser is relatively high, so that problems arise in that the working medium cannot be liquefied (condensed) and cooling performance is deteriorated. Therefore, it is more preferable that the critical temperature of the working medium is high.

(Refrigerating Cycle System)

As an example of the heat cycle system, a refrigerating cycle system will be described.

The refrigerating cycle system is a system in which a working medium removes heat energy from a load fluid in an evaporator to cool the load fluid to a lower temperature.

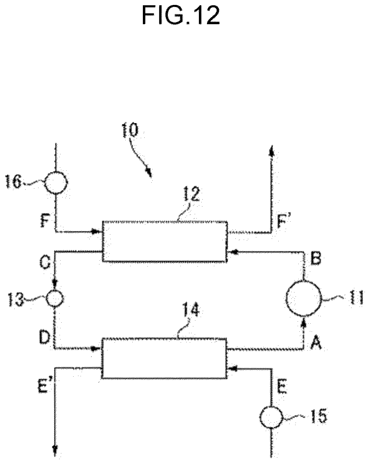

Fig. 12 is a schematic configuration diagram illustrating an example of a refrigerating cycle system of the disclosure. A refrigerating cycle system 10 is a system generally configured to include a compressor 11 to compress a working medium vapor A to form a high-temperature and high-pressure working medium vapor B, a condenser 12 to cool and liquefy the working medium vapor B discharged from the compressor 11 to form a low-temperature and high-pressure working medium C, an expansion valve 13 to let the working medium C discharged from the condenser 12 expand to form a low-temperature and low-pressure working medium D, an evaporator 14 to heat the working medium D discharged from the expansion valve 13 to form a high-temperature and low-pressure working medium vapor A, a pump 15 to supply a load fluid E to the evaporator 14, and a pump 16 to supply a fluid F to the condenser 12.

In the refrigerating cycle system 10, a cycle of the following (i) to (iv) is repeated.

(i) A working medium vapor A discharged from the evaporator 14 is compressed by the compressor 11 to form a high-temperature and high-pressure working medium vapor B (hereinafter, referred to as "AB process").

(ii) The working medium vapor B discharged from the compressor 11 is cooled and liquefied by a fluid F in the condenser 12 to form a low-temperature and high-pressure working medium C. At this time, the fluid F is heated to form a fluid F' and the fluid F' is discharged from the condenser 12 (hereinafter, referred to as "BC process").

(iii) The working medium C discharged from the condenser 12 is expanded in the expansion valve 13 to form a low-temperature and low-pressure working medium D (hereinafter, referred to as "CD process").

(iv) The working medium D discharged from the expansion valve 13 is heated by a load fluid E in the evaporator 14 to form a high-temperature and low-pressure working medium vapor A. At this time, the load fluid E is cooled to form a load fluid E' and the load fluid E' is discharged from the evaporator 14 (hereinafter, referred to as "DA process").

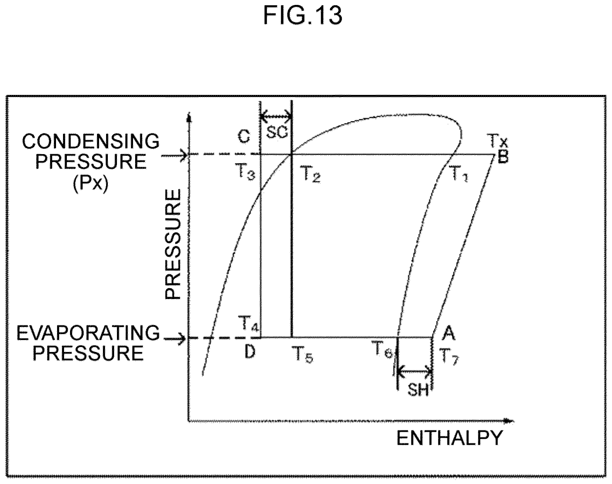

The refrigerating cycle system 10 is a cycle system including an adiabatic isentropic change, an isenthalpic change, and an isobaric change. The state change of the working medium, as represented on a pressure-enthalpy chart (curve) as shown in Fig. 13, can be represented as a trapezoid having points A, B, C, and D as vertexes.

The AB process is a process in which adiabatic compression is performed by the compressor 11 to change the low-temperature and low-pressure working medium vapor A to the high-temperature and high-pressure working medium vapor B, and is represented by AB line in Fig. 13. As described below, the working medium vapor A is introduced into the compressor 11 in a superheated state, and the working medium vapor B thus obtained is also a vapor in a superheated state. A compressor suction saturated gas density is a density ($\rho$s) in the state A in Fig. 13. A compressor discharge gas temperature (discharge temperature) is a temperature (Tx) in the state B in Fig. 13, and is the maximum temperature in the refrigerating cycle. A compressor discharge pressure (discharge pressure) is a pressure (Px) in the state B in Fig. 13, and is the maximum pressure in the refrigerating cycle. Since the BC process is isobaric cooling, the discharge pressure shows the same value as the condensing pressure. Therefore, in Fig. 13, the condensing pressure is indicated as Px for convenience.

The BC process is a process in which isobaric cooling is performed by the condenser 12 to change the high-temperature and high-pressure working medium vapor B to the low-temperature and high-pressure working medium C, and is represented by BC line in Fig. 13. The pressure at this time is the condensing pressure. Of intersection points of the pressure-enthalpy chart and the BC line, an intersection point T1 on the high enthalpy side is a condensation temperature, and an intersection point T2 on the low enthalpy side is a condensation boiling point temperature. Here, the temperature gradient in a case in which the working medium is a non-azeotropic mixture medium is represented by a difference between T1 and T2.

The CD process is a process in which isenthalpic expansion is performed by the expansion valve 13 to change the low-temperature and high-pressure working medium C to the low-temperature and low-pressure working medium D, and is represented by CD line in Fig. 13. In a case in which a temperature in the low-temperature and high-pressure working medium C is represented by T3, T2 - T3 corresponds to a supercooling temperature (SC) of the working medium in the cycle of (i) to (iv).

The DA process is a process in which isobaric heating is performed by the evaporator 14 to return the low-temperature and low-pressure working medium D to the high-temperature and low-pressure working medium vapor A, and is represented by DA line in Fig. 13. The pressure at this time is the evaporating pressure. Of intersection points of the pressure-enthalpy chart and the DA line, an intersection point T6 on the high enthalpy side is an evaporation temperature. In a case in which a temperature of the working medium vapor A is represented by T7, T7 - T6 corresponds to a superheating temperature (SH) of the working medium in the cycle of (i) to (iv). T4 indicates a temperature of the working medium D.

CAP and COP of the working medium are each determined from the following Formulas (11), (12), (13), and (14) by using each enthalpy, hA, hB, hC, hD, and a refrigerant mass circulation amount qmr in each state of A (after evaporation, low-temperature and low-pressure), B (after compression, high-temperature and high-pressure), C (after condensation, low-temperature and high-pressure), and D (after expansion, low-temperature and low-pressure) of the working medium. It is assumed that there is no pressure loss in the pipelines and heat exchanger.

In a case in which the loss work of the compressor is applied as heat to the working medium, using a compressor efficiency $\eta$, a working medium vapor B' after the AB process is expressed by the following formula using hA, hB, and $\eta$.

$$hB' = hA + (hB - hA)/\eta$$

Thermodynamic properties required for calculating the cycle performance of the working medium can be calculated based on the National Institute of Science and Technology (NIST) Reference Fluid Thermodynamic and Transport Properties Database (REFPROP 10.0), a generalized state equation (Soave-Redlich-Kwong equation) based on a principle of corresponding states, and thermodynamic relational expressions.

$$CAP = (hA - hD) \times \rho s \ldots (11)$$

$$COP = Q/P = qmr(hA - hD)/qmr(hB - hA) = (hA - hD)/(hB - hA) \ldots (12)$$

$$Q = qmr(hA - hD)...(13)$$

$$P = qmr(hB - hA)...(14)$$

In consideration of compressor efficiency, COP and P are expressed by the following are expressed by the following formulas.

$$COP = Q/P = (hA - hD)/(hB' - hA)...(15)$$

$$P = qmr(hB' - hA)...(16)$$

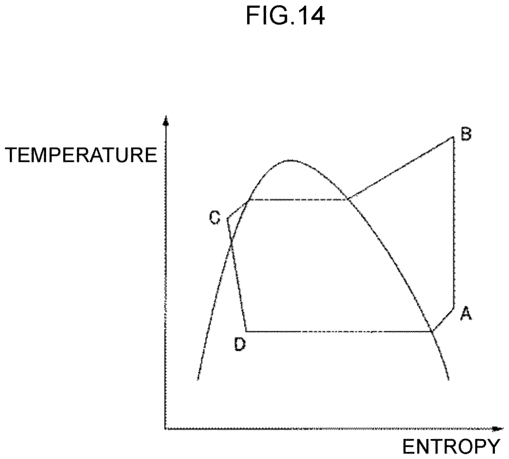

Similarly, the state change of the working medium can be expressed on a temperature-entropy chart as in Fig. 14.

<Pressure Loss>

The pressure loss is a factor that lowers the performance by increasing the condensing pressure and decreasing the evaporating pressure in the refrigerating cycle. The pressure loss results from friction in the flow in the condenser, the evaporator, and the connection pipe in the refrigerating cycle, and is represented by the following formula using a coefficient of friction f (-), a length L (m), a diameter d (m), an evaporator capacity $\Phi_0$ (kW), evaporation latent heat $W_r$ (kJ/kg), and a specific volume $v_s$ (m$^3$/kg).

[Mathematical Formula 3]

$$\Delta P_{loss} = \left( f \cdot \frac{L}{2d^5} \cdot \Phi_0{}^2 \right) \cdot \left( \frac{v_s}{W_r{}^2} \right)$$

Here, the parentheses in the first half of the equation are determined by the dimensions of the components constituting the refrigerating cycle and the specifications of performance. Since the parentheses in the second half are determined by the thermophysical properties of the refrigerant, the parentheses in the second half should be considered in a case in which the device specification and the device performance are the same. Therefore, the pressure loss decreases as the specific volume of the refrigerant decreases and the evaporation latent heat increases, and the pressure loss increases as the specific volume of the refrigerant increases and the evaporation latent heat decreases. Since the work loss decreases as the pressure loss decreases, the device performance is improved.

In the disclosure, the pressure loss is indicated in parentheses in the second half of the formula, and is indicated by a relative pressure loss with respect to R410A.

The working medium of the disclosure can be suitably used as a working medium for a heat cycle system such as a refrigerant for a refrigerator, a refrigerant for an air-conditioning apparatus, a working medium for a power generation system (such as exhaust heat recovery power generation), a working medium for a latent heat transport apparatus (such as a heat pipe), or a secondary cooling fluid.

<Composition for Heat Cycle System>

The working medium of the disclosure can be usually mixed with a lubricating oil and used as a composition for a heat cycle system in application to a heat cycle system. A composition for a heat cycle system of the disclosure contains the working medium of the disclosure and a lubricating oil. The composition for a heat cycle system of the disclosure may further contain a stabilizer, and known additives such as a leak detecting substance, in addition to the working medium of the disclosure and the lubricating oil.

(Lubricating Oil)

The type of the lubricating oil is not particularly limited, and it is preferable to select a lubricating oil whose solubility in propane, HFO-1123, and the third component contained in the working medium does not significantly change.

**EP 4 442 787 A1**

Specifically, in a case in which the working medium comes into contact with the lubricating oil and a part of the components contained in the working medium is dissolved in the lubricating oil, the content of each component (such as propane, HFO-1123, or the third component) in the working medium remaining without being dissolved is preferably within $\pm 5\%$ by mass with respect to the content of each component in the working medium.

Examples of the lubricating oil include known lubricating oils used in a heat cycle system. The lubricating oil is contained in the composition for a heat cycle system together with the working medium, circulates in a heat cycle system, and particularly functions as a lubricating oil in a compressor in the heat cycle system. In the heat cycle system, the lubricating oil preferably has sufficient compatibility with the working medium under low temperature conditions while ensuring lubricity and sealability of the compressor. From such a viewpoint, the kinetic viscosity at 40°C of the lubricating oil is preferably from 1 mm$^2$/sec to 750 mm$^2$/sec and more preferably from 1 mm$^2$/sec to 400 mm$^2$/sec. The kinetic viscosity at 100°C is preferably from 1 mm$^2$/sec to 100 mm$^2$/sec and more preferably from 1 mm$^2$/sec to 50 mm$^2$/sec.

Examples of the lubricating oil include an ester-based lubricating oil, an ether-based lubricating oil, a fluorine-based lubricating oil, a hydrocarbon-based synthetic oil, and a mineral oil.

The ester-based lubricating oil is an oily ester compound having an ester bond in the molecule. Examples of the ester-based lubricating oil include a dibasic acid ester, a polyol ester, a complex ester, and a polyol carbonate ester.

The dibasic acid ester is, for example, preferably an ester of a dibasic acid having from 5 to 10 carbon atoms (such as such as glutaric acid, adipic acid, pimelic acid, suberic acid, azelaic acid, or sebacic acid) with a monohydric alcohol having from 1 to 15 carbon atoms and having a linear alkyl group or a branched alkyl group (such as methanol, ethanol, propanol, butanol, pentanol, hexanol, heptanol, octanol, nonanol, decanol, undecanol, dodecanol, tridecanol, tetradecanol, pentadecanol, 2-ethylhexanol, isodecyl alcohol, or 3-ethyl-3-hexanol). Specific examples thereof include ditridecyl glutarate, di(2-ethylhexyl) adipate, diisodecyl adipate, ditridecyl adipate, and di(3-ethyl-3-hexyl) sebacate.

The polyol ester is an ester synthesized from a polyol and a fatty acid (monovalent aliphatic carboxylic acid).

The polyol ester is preferably an ester of a diol (such as ethylene glycol, 1,3-propanediol, propylene glycol, 1,4-butanediol, 1,2-butanediol, 1,5-pentadiol, neopentyl glycol, 1,7-heptanediol, or 1,12-dodecanediol) or polyol having from 3 to 20 hydroxyl groups (such as trimethylolethane, trimethylolpropane, trimethylolbutane, pentaerythritol, glycerol, sorbitol, sorbitan, or sorbitol/glycerin condensate) with a fatty acid having from 6 to 20 carbon atoms (such as linear or branched fatty acid such as hexanoic acid, heptanoic acid, octanoic acid, 2-ethylhexanoic acid, pelargonic acid, decanoic acid, undecanoic acid, dodecanoic acid, eicosanoic acid, or oleic acid, or a fatty acid having a quaternary $\alpha$ carbon atom).

The polyol ester may have a free hydroxyl group.

The polyol ester is more preferably an ester of a hindered alcohol (such as neopentyl glycol, trimethylolethane, trimethylolpropane, trimethylolbutane, or pentaerythritol), specifically, trimethylolpropane tripelargonate, pentaerythritol 2-ethylhexanoate, or pentaerythritol tetrapelargonate.

The complex ester is an ester obtained by combining (complexing) several kinds of esters. The complex ester is a mixture of esters synthesized from at least one of a fatty acid or a dibasic acid and at least one of a monohydric alcohol or a polyol. Examples of the fatty acid, the dibasic acid, the monohydric alcohol, and the polyol include the same ones as those mentioned for the dibasic acid ester and the polyol ester.

The polyol carbonate ester is an ester of carbonic acid with a polyol, or a ring-opened polymer of cyclic alkylene carbonate.

Examples of the polyol include the same ones as those mentioned for the polyol ester.

The ether-based lubricating oil is an oily ether compound having an ether bond in the molecule. Examples of the ether-based lubricating oil include polyalkylene glycol and polyvinyl ether.

Examples of the polyalkylene glycol include polyalkylene polyol, and a compound obtained by alkyl-etherifying some or all of hydroxyl groups of the polyalkylene polyol. The polyalkylene glycol is obtained, for example, by polymerizing an alkylene oxide having from 2 to 4 carbon atoms (such as ethylene oxide or propylene oxide) with water, an alkane monool, a diol, or a polyol as an initiator.

The oxyalkylene unit in one molecule of polyalkylene glycol may be one kind or two or more kinds. The polyalkylene glycol is preferably a compound containing at least an oxypropylene unit in one molecule, and more preferably polypropylene glycol or polypropylene glycol dialkyl ether.

The polyvinyl ether is a polymer having a constituent unit derived from at least a vinyl ether monomer.

Examples of the polyvinyl ether include a polymer of a vinyl ether monomer, a copolymer of a vinyl ether monomer and a hydrocarbon monomer having an unsaturated double bond, and a copolymer of a vinyl ether monomer and a vinyl ether monomer having a polyalkylene oxide chain. The alkylene oxide contained in the polyalkylene oxide chain is preferably ethylene oxide or propylene oxide. The polymer may be either a block copolymer or a random copolymer.

The vinyl ether monomer is preferably an alkyl vinyl ether. The alkyl group contained in the alkyl vinyl ether is preferably an alkyl group having 6 or less carbon atoms. The vinyl ether monomer may be used singly, or in combination of two or more kinds thereof.

Examples of the hydrocarbon monomer having an unsaturated double bond include ethylene, propylene, various forms of butene, various forms of pentene, various forms of hexene, various forms of heptene, various forms of octene, diisobutylene, triisobutylene, styrene, $\alpha$-methylstyrene, and various forms of alkyl-substituted styrene. The hydrocarbon monomer having an unsaturated double bond may be used singly, or in combination of two or more kinds thereof.

The fluorine-based lubricating oil is an oily compound having a fluorine atom in the molecule.

Examples of the fluorine-based lubricating oil include compound having hydrogen atoms of a mineral oil or hydrocarbon-based synthetic oil described below (such as poly-$\alpha$-olefin, alkylbenzene, or alkylnaphthalene) substituted by fluorine atoms, a perfluoropolyether oil, and a fluorinated silicone oil.

The mineral oil is obtained by purifying a lubricating oil fraction obtained by atmospheric distillation or vacuum distillation of crude oil by a purification treatment (such as solvent deasphalting, solvent extraction, hydrocracking, solvent dewaxing, catalytic dewaxing, hydrorefining, or clay treatment) optionally in combination. Examples of the mineral oil include a paraffinic mineral oil and a naphthenic mineral oil.

The hydrocarbon-based synthetic oil is an oily synthetic compound whose molecules are composed only of carbon atoms and hydrogen atoms. Examples of the hydrocarbon-based synthetic oil include poly-$\alpha$-olefin, alkylbenzene, and alkylnaphthalene.

The lubricating oil may be used singly, or in combination of two or more kinds thereof.

The lubricating oil is preferably one or both of a polyol ester and a polyalkylene glycol from the viewpoint of compatibility with the working medium, and more preferably a polyalkylene glycol from the viewpoint of obtaining a remarkable antioxidant effect by a stabilizer.

The content of the lubricating oil in the composition for a heat cycle system may be in a range that does not significantly deteriorate the effect of the disclosure, and is preferably from 10 parts by mass to 100 parts by mass and more preferably from 20 parts by mass to 50 parts by mass with respect to 100 parts by mass of the working medium.

(Stabilizer)

The stabilizer is a component improving the stability of the working medium against heat and oxidation. Examples of the stabilizer include an oxidation resistance-improving agent, heat resistance-improving agent, and a metal deactivator.

The oxidation resistance-improving agent is a stabilizer that stabilizes a working medium by suppressing decomposition of the working medium mainly by oxygen under a condition that the working medium is repeatedly compressed and heated in a heat cycle system.

The heat resistance-improving agent is a stabilizer that stabilizes a working medium by suppressing decomposition of the working medium mainly by heat under a condition that the working medium is repeatedly compressed and heated in a heat cycle system.

Examples of the oxidation resistance-improving agent and the heat resistance-improving agent include N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol, and 4,4'-methylenebis(2,6-di-t-butylphenol). Each of the oxidation resistance-improving agent and the heat resistance-improving agent may be used singly, or in combination of two or more kinds thereof.

The metal deactivator is used for the purpose of preventing a metal material in a heat cycle system from adversely affecting the working medium and the lubricating oil, or for the purpose of protecting the metal material from the working medium and the lubricating oil. Specific examples thereof include a chemical agent forming a coating film on a surface of the metal material.

Examples of the metal deactivator include imidazole, benzimidazole, 2-mercaptobenzothiazole, 2,5-dimercaptothiadiazole, salicylidene-propylenediamine, pyrazole, benzotriazole, tolyltriazole, 2-methylbenzimidazole, 3,5-dimethylpyrazole, methylenebis-benzotriazole; an organic acid or an ester thereof; a primary, secondary or tertiary aliphatic amine; an amine salt of an organic acid or inorganic acid; a heterocyclic nitrogen-containing compound, and an amine salt of an alkyl phosphate, or a derivative thereof.

The content of the stabilizer in the composition for a heat cycle system with respect to total amount (100% by mass) of the working medium is not particularly limited as long as the effect of the disclosure is not significantly deteriorated, and is preferably 5% by mass or less and more preferably 1% by mass or less.

(Known Additives Such As Leak Detecting Substance)

The leak detecting substance refers to a substance added for the purpose of making it easy to detect with odor, color, or the like in a case in which the working medium or the like leaks from a heat cycle system.

Examples of the leak detecting substance include an ultraviolet fluorescent dye, an odor gas, and an odor masking agent.

Examples of the ultraviolet fluorescent dye include known ultraviolet fluorescent dyes described in U.S. Patent No. 4249412, Japanese National-Phase Publication (JP-A) No. H10-502737, JP-A No. 2007-511645, JP-A No. 2008-500437, JP-A No. 2008-531836, and the like.

The odor masking agent refers to a substance added for the purpose of improving fragrance.

Examples of the odor masking agent include known perfumes described in JP-A No. 2008-500437, JP-ANo. 2008-531836, and the like.

In the case of using the leak detecting substance, a solubilizing agent improving the solubility of the leak detecting substance in the working medium may be used.

Examples of the solubilizing agent include those described in JP-A No. 2007-511645, JP-A No. 2008-500437, and JP-A No. 2008-531836.

The content of the leak detecting substance in the composition for a heat cycle system with respect to total amount (100% by mass) of the working medium is not particularly limited as long as the effect of the disclosure is not significantly deteriorated, and is preferably 2% by mass or less and more preferably 0.5% by mass or less.

<Heat Cycle System>

A heat cycle system of the disclosure is a heat cycle system using the working medium of the disclosure or the composition for a heat cycle system of the disclosure.

The heat cycle system of the disclosure may be a heat pump system utilizing heat obtained by a condenser or may be a refrigerating cycle system utilizing coldness obtained by an evaporator.

Specific examples of the heat cycle system of the disclosure include a freezing/refrigeration device, an air-conditioning apparatus, a power generation system, a heat transport apparatus, and a secondary cooling machine. In particular, since the heat cycle system of the disclosure can stably and safely exhibit heat cycle performance in a working environment at higher temperature, the heat cycle system is preferably used as an air-conditioning apparatus to be installed outdoors or the like in many cases. The heat cycle system of the disclosure is also preferably used as a freezing/refrigeration device.

Specific examples of the air-conditioning apparatus include a room air-conditioner, a package air-conditioner (such as a store package air-conditioner, a building package air-conditioner, or a facility package air-conditioner), a gas engine heat pump, a train air-conditioning system, and an automobile air-conditioning system.

Specific examples of the freezing/refrigeration device include a refrigerated display (such as a built-in refrigerated display or a separate refrigerated display), an industrial freezer/refrigerator, vending machine, and an ice making machine.

The power generation system is preferably a power generation system by Rankine cycle system. Specific examples of the power generation system include a system in which in an evaporator, a working medium is heated by geothermal energy, solar heat, waste heat in a medium-to-high temperature range at a level of from 50°C to 200°C, or the like, and the vaporized working medium in a high-temperature and high-pressure state is adiabatically expanded by an expansion device, so that a power generator is driven by the work generated by the adiabatic expansion to carry out power generation.

The heat transport apparatus is preferably a latent heat transport apparatus. Examples of the latent heat transport apparatus include a heat pipe conducting latent heat transport utilizing evaporation, boiling, condensation, or the like of a working medium sealed in an apparatus, and a two-phase closed thermosiphon. The heat pipe is applied to a relatively small-sized cooling apparatus such as a cooling apparatus of a heating portion of a semiconductor device and electronic equipment. The two-phase closed thermosiphon is widely used for a gas-gas heat exchanger, to accelerate snow melting and to prevent freezing of roads, since it does not require a wick and the structure thereof is simple.

<Storage Method of Composition>

A storage method of a composition of the disclosure is a storage method of filling a composition, which contains propane, at least one of HFO-1123 or HFO-1132(E), and at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E), into a container, sealing the container, and storing the composition in a gas-liquid state where a gas phase and a liquid phase coexist in the container, in which a combustion heat amount of the composition is less than 19.000 MJ/kg, and a concentration of oxygen at a temperature of 25°C in the gas phase is maintained at 3000 ppm by volume or less.

Preferred aspects of the composition are the same as the preferred aspects of the working medium.

The method of filling the composition into the container is not particularly limited, and a generally known method can be used. For example, after all the components contained in the composition are mixed, the mixed composition may be introduced into a container. Each component contained in the composition may be individually introduced into a container, and each component may be mixed in the container. only some of the components contained in the composition may be mixed, the mixed components and the remaining components may be individually introduced into a container, and the components may be mixed in the container.

In the storage method of a composition of the disclosure, it is preferable to fill a liquid composition into a container. Examples of the method of liquefying the composition include a method of cooling the composition and a method of pressurizing the composition. The phrase "to fill a liquid composition into a container" encompasses not only an aspect in which a liquid composition is introduced into a container, but also an aspect in which each component contained in the composition (provided that, some components may be mixed in advance) is individually introduced into a container to obtain a liquid composition in the container.

The container for storing the composition is not particularly limited as long as it is a container capable of storing the composition in a gas-liquid state under internal pressure. Examples of the container include pressure-resistant containers such as a storage tank as a storage container fixed, a filling cylinder used for transportation, and a secondary filling cylinder (service can). The container may be a simple container for temporary storage.

The material of the container is not particularly limited, and examples thereof include glass, carbon steel, manganese steel, chromium-molybdenum steel, stainless steel, and an aluminum alloy. The inner wall of the container may be subjected to lining of a resin or the like.

The concentration of oxygen at 25°C in the gas phase is maintained at 3000 ppm by volume or less. In a case in which the concentration of oxygen in the gas phase is 3000 ppm by volume or less, the polymerization reaction and the like of the composition can be suppressed. For example, as compared with the storage method of HFO-1123 alone, in the storage method of the disclosure, the polymerization reaction and the like can be suppressed even in a case in which the concentration of oxygen is as high as 3000 ppm by volume. The reason for this is presumed as follows.

It is considered that the polymerization of HFO-1123 with oxygen proceeds through by-products such as a peroxide generated by reaction of oxygen with an unsaturated bond and by using the radical active species as a starting point of the polymerization and reaction of HFO-1123 in a chain manner. However, in a case in which a hydrocarbon containing a large amount of hydrogen atoms, such as propane, serves as a chain transfer agent to inactivate the terminal of the radical active species, the chain reaction of polymerization is stopped. Since the composition in the storage method of the disclosure contains propane together with HFO-1123, it is considered that the polymerization reaction and the like can be suppressed even in a case in which the concentration of oxygen is as high as 3000 ppm by volume.

The concentration of oxygen at 25°C in the gas phase is preferably from 1 ppm by volume to 3000 ppm by volume, more preferably from 3 ppm by volume to 1000 ppm by volume, still more preferably from 3 ppm by volume to 300 ppm by volume, and particularly preferably from 3 ppm by volume to 50 ppm by volume. In a case in which the concentration of oxygen is 1 ppm by volume or more, productivity is improved.

The concentration of oxygen in the gas phase can be measured by gas chromatography.

In the storage method of a composition of the disclosure, it is preferable to fill a liquid composition into a container after degassing the inside of the container. The method of degassing the inside of the container is not particularly limited, and a generally known method can be used.

Oxygen in the container is removed by degassing the inside of the container. In a case in which a liquid composition is filled into a container having a reduced concentration of oxygen, a space in the container is rapidly saturated with vapor from the liquid. The concentration of oxygen in the gas phase filled with saturated vapor is 3000 ppm by volume or less.

In a case in which the container is degassed, a non-condensable gas such as nitrogen is removed together with oxygen, but the total content of the non-condensable gas is preferably 1.5% by volume (15000 ppm by volume) or less of the gas phase at 25°C.

In the storage method of a composition of the disclosure, it is necessary to maintain the pressure and temperature during storage at a state of a prescribed value or less according to the design pressure and temperature of the container. Unless particularly specified, from the viewpoint of safety, the temperature during storage is preferably 60°C or less, more preferably 50°C or less, more preferably 40°C or less, and still more preferably 30°C or less. The lower limit value of the temperature during storage is not particularly limited, but since the inside of the container may have a negative pressure in a case in which the temperature is the boiling point or less of the composition and air, moisture, and the like may be mixed, the temperature during storage is preferably -30°C or more, more preferably -15°C or more, and still more preferably 0°C or more.

The composition can be stored, for example, in a well-ventilated environment that is not exposed to direct sunlight. The composition may be stored using a refrigerating facility if necessary.

According to the storage method of a composition of the disclosure, quality deterioration due to storage of the composition is suppressed.

For example, the quality can be maintained so that the composition during storage or after storage satisfies one or more of the following (1) to (4). It is preferable to satisfy two or more of the following (1) to (4), more preferable to satisfy three or more of the following (1) to (4), and most preferable to satisfy all of the following (1) to (4). (1) The moisture is 500 ppm or less. (2) The evaporation residue is 100 ppm or less. (3) The acid content is 1 ppm or less. (4) The color phase is colorless and transparent.

According to the storage method of a composition of the disclosure, since a polymerization reaction or the like of a composition filled into a container in a gas-liquid state is suppressed, purity and refrigerant performance of the composition can be maintained. Since a solid polymerization product is not generated in the container, for example, there is no concern that a valve or the like is blocked or foreign matter is mixed into a refrigerant system. The composition can be stored at low cost.

According to the storage method of a composition of the disclosure, the composition can be stably stored for a long period of time. For example, the composition may be stored in the container for one week or more, one month or more, three months or more, six months or more, or one year or more.

<Storage Container of Composition>

An aspect of a storage container of a composition of the disclosure is a sealed storage container into which a composition, which contains propane, at least one of HFO-1123 or HFO-1132(E), and at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E), is filled in such a state that a gas phase and a liquid phase coexist, in which a combustion heat amount of the composition is less than 19.000 MJ/kg, and a concentration of oxygen at a temperature of 25°C in the gas phase is 3000 ppm by volume or less.

The concentration of oxygen at 25°C in the gas phase is preferably from 1 ppm by volume to 3000 ppm by volume, more preferably from 3 ppm by volume to 1000 ppm by volume, still more preferably from 3 ppm by volume to 300 ppm by volume, and particularly preferably from 3 ppm by volume to 50 ppm by volume. In a case in which the concentration of oxygen is 1 ppm by volume or more, productivity is improved.

Preferred aspects of the component contained in the composition are the same as the preferred aspects of the component contained in the working medium.

Preferred aspects of the storage container are the same as the preferred aspects of the container used in the storage method.

Another aspect of a storage container of a composition of the disclosure is a sealed storage container into which a composition, which contains propane, at least one of HFO-1123 or HFO-1132(E), at least one selected from the group consisting of HFO-1234yf, HFO-1234ze(E), HFC-32, $CO_2$, $CF_3I$, HCFO-1224yd(Z), HCFO-1224yd(E), HFO-1233zd(E), HFO-1336mzz(E), HFO-1225ye(Z), and HFO-1225ye(E), and water is filled, in which a combustion heat amount of the composition is less than 19.000 MJ/kg, and a content of the water is 500 ppm by mass or less with respect to a total amount of the composition.

The content of water is preferably 100 ppm by mass or less and more preferably 50 ppm or less with respect to the total amount of the composition. The lower limit value of the content of water is not particularly limited.

The content of water is measured by sending a sample to the Karl Fischer reagent and using Karl Fischer coulometric titration.

Preferred aspects of the component other than water contained in the composition are the same as the preferred aspects of the component contained in the working medium.

Preferred aspects of the storage container are the same as the preferred aspects of the container used in the storage method.

In the storage container of a composition of the disclosure, since the content of water during storage is 500 ppm or less, quality deterioration due to storage of the composition is suppressed.

<Supplementary Description>

Preferable aspects of the working medium of the disclosure will be supplementarily described.

(Supplementary Description 1)

A working medium containing:

propane;
at least one of 1,1,2-trifluoroethylene or (E)-1,2-difluoroethylene; and
at least one selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene,

in which a combustion heat amount is less than 19.000 MJ/kg.

(Supplementary Description 2)

The working medium according to Supplementary Description 1, in which the working medium contains at least one selected from the group consisting of the 2,3,3,3-tetrafluoro-1-propene, the (E)-1,3,3,3-tetrafluoropropene, the difluoromethane, the $CO_2$, and the $CF_3I$.

(Supplementary Description 3)

The working medium according to Supplementary Description 1, in which the working medium contains at least one selected from the group consisting of the 2,3,3,3-tetrafluoro-1-propene, the (E)-1,3,3,3-tetrafluoropropene, and the difluoromethane.

(Supplementary Description 4)

The working medium according to Supplementary Description 1, in which the working medium contains the 1,1,2-trifluoroethylene.

(Supplementary Description 5)

The working medium according to Supplementary Description 1, in which a content of the propane is 1.0% by mass or more with respect to a total amount of the working medium.

(Supplementary Description 6)

The working medium according to Supplementary Description 1, in which the working medium contains the difluoromethane, and
a content of the difluoromethane is 22.0% by mass or less with respect to a total amount of the working medium.

(Supplementary Description 7)

The working medium according to Supplementary Description 1, in which the working medium contains the $CO_2$, and
a content of the $CO_2$ is 15.0% by mass or less with respect to a total amount of the working medium.

(Supplementary Description 8)

The working medium according to Supplementary Description 1, in which the working medium contains the propane, the 1,1,2-trifluoroethylene, and the 2,3,3,3-tetrafluoro-1-propene,

a mass ratio of a content of the propane and a content of the 1,1,2-trifluoroethylene is from 5 : 95 to 29 : 71,
a content of the 2,3,3,3-tetrafluoro-1-propene is from 10.5% by mass to 25.0% by mass with respect to a total content of the propane, the 1,1,2-trifluoroethylene, and the 2,3,3,3-tetrafluoro-1-propene, and
the total content of the propane, the 1,1,2-trifluoroethylene, and the 2,3,3,3-tetrafluoro-1-propene is 80% by mass or more with respect to a total amount of the working medium.

(Supplementary Description 9)

The working medium according to Supplementary Description 1, in which the working medium contains the propane, the 1,1,2-trifluoroethylene, and the difluoromethane,

a mass ratio of a content of the propane and a content of the 1,1,2-trifluoroethylene is from 18 : 82 to 22 : 78, and
a content of the difluoromethane is from 5.5% by mass to 19.5% by mass with respect to a total content of the propane, the 1,1,2-trifluoroethylene, and the difluoromethane.

(Supplementary Description 10)

The working medium according to Supplementary Description 1, in which the working medium contains the propane, the 1,1,2-trifluoroethylene, and the difluoromethane,

a mass ratio of a content of the propane and a content of the 1,1,2-trifluoroethylene is from 5 : 95 to 23 : 77, and
a content of the difluoromethane is from 20.1% by mass to 21.9% by mass with respect to a total content of the propane, the 1,1,2-trifluoroethylene, and the difluoromethane.

(Supplementary Description 11)

The working medium according to Supplementary Description 1, in which the working medium contains the propane, the 1,1,2-trifluoroethylene, and the difluoromethane,

a mass ratio of a content of the propane and a content of the 1,1,2-trifluoroethylene is from 18.9 : 81.1 to 23 : 77, and
a content of the difluoromethane is from 12.5% by mass to 21.5% by mass with respect to a total content of the propane, the 1,1,2-trifluoroethylene, and the difluoromethane.

(Supplementary Description 12)

The working medium according to Supplementary Description 1, in which the working medium contains the propane, the 1,1,2-trifluoroethylene, and the (E)-1,3,3,3-tetrafluoropropene,

a content of the propane is 25.0% by mass or less with respect to a total content of the propane and the 1,1,2-trifluoroethylene,
a content of the (E)-1,3,3,3-tetrafluoropropene is from 11.0% by mass to 25.0% by mass with respect to a total content of the propane, the 1,1,2-trifluoroethylene, and the (E)-1,3,3,3-tetrafluoropropene, and
the total content is 78.5% by mass or more with respect to a total amount of the working medium.

(Supplementary Description 13)

The working medium according to Supplementary Description 1, in which the working medium contains the propane, the 1,1,2-trifluoroethylene, and the (E)-1,3,3,3-tetrafluoropropene,

a content of the propane is 10.0% by mass or less with respect to a total content of the propane and the 1,1,2-trifluoroethylene, and
a content of the (E)-1,3,3,3-tetrafluoropropene is 15.0% by mass or less with respect to a total content of the propane, the 1,1,2-trifluoroethylene, and the (E)-1,3,3,3-tetrafluoropropene.

(Supplementary Description 14)

The working medium according to Supplementary Description 1, in which the working medium contains the propane, the 1,1,2-trifluoroethylene, and the (E)-1,3,3,3-tetrafluoropropene,

a content of the propane is 20.0% by mass or less with respect to a total content of the propane and the 1,1,2-trifluoroethylene, and
a content of the (E)-1,3,3,3-tetrafluoropropene is 9.0% by mass or less with respect to a total content of the propane, the 1,1,2-trifluoroethylene, and the (E)-1,3,3,3-tetrafluoropropene.

(Supplementary Description 15)

The working medium according to Supplementary Description 1, in which the working medium contains the propane, the 1,1,2-trifluoroethylene, and the $CO_2$,

in a case in which a content of the 1,1,2-trifluoroethylene with respect to a total content of the propane, and the 1,1,2-trifluoroethylene, and the $CO_2$ is designated as Xi% by mass, and a content of the $CO_2$ with the total content is designated as Yi% by mass, the $X_1$ and the $Y_1$ satisfy the following Formula (1), and
the total content is 78.5% by mass or more with respect to a total amount of the working medium:

$$-0.00115X_1^3 + 0.13537X_1^2 - 6.20662X_1 + 151.14664 \leq Y_1 \leq 59...(1)$$

(Supplementary Description 16)

The working medium according to Supplementary Description 15, in which the content of the $CO_2$ is 20.0% by mass or less with respect to the total content.

(Supplementary Description 17)

The working medium according to Supplementary Description 1, in which the working medium contains the propane, the 1,1,2-trifluoroethylene, and the $CF_3I$,

in a case in which a content of the propane with respect to a total content of the propane, and the 1,1,2-trifluoroethylene, and the $CF_3I$ is designated as $X_2$% by mass, and a content of the $CF_3I$ with the total content is designated as $Y_2$% by mass, the $X_2$ and the $Y_2$ satisfy the following Formula (2A), and the total content is 78.5% by mass or more with respect to a total amount of the working medium:

$$Y_2 \leq -1.125X_2 + 39...(2A)$$

(Supplementary Description 18)

The working medium according to Supplementary Description 17, in which the $X_2$ and the $Y_2$ further satisfy the following Formula (2B):

$$Y_2 \leq 0.05994X_2^2 + 0.23676X_2 + 11.85165...(2B)$$

(Supplementary Description 19)

The working medium according to Supplementary Description 1, in which the working medium contains the propane, the (E)-1,2-difluoroethylene, and the third component, and the combustion heat amount is less than 15.250 MJ/kg.

(Supplementary Description 20)

The working medium according to Supplementary Description 1, in which the working medium contains the propane, the (E)-1,2-difluoroethylene, and the third component, and a content of the propane is 10.0% by mass or less with respect to a total content of the propane and the (E)-1,2-difluoroethylene.

(Supplementary Description 21)

The working medium according to Supplementary Description 1, in which the working medium contains the propane, the 1,1,2-trifluoroethylene, the 2,3,3,3-tetrafluoro-1-propene, and the difluoromethane, and in a case in which a content of the difluoromethane with respect to a total content of the propane, the 1,1,2-trifluoroethylene, the 2,3,3,3-tetrafluoro-1-propene, and the difluoromethane is designated as A% by mass, a content of the 2,3,3,3-tetrafluoro-1-propene with respect to the total content is designated as B% by mass, a content of the propane with respect to the total content is designated as C% by mass, and a content of the 1,1,2-trifluoroethylene with respect to the total content is designated as D% by mass, the A, the B, the C, and the D satisfy the following Formulas (3A) to (3D):

$$19 \leq A \leq 22...(3A)$$

$$0.1562A^2 - 5.88147A + 56.79 \leq B \leq -0.1444A^2 + 4.9917A - 0.9609...(3B)$$

$$3 \leq C \leq -0.0168B + 0.032A + 23.365...(3C)$$

$$(0.0006A^2 + 0.0103A - 2.6844)C + (0.1143A^2 - 5.4982A + 133.96) \leq D \leq (0.00025A + 0.0213)C^2 + (-0.0003A^2 - 0.0055A - 1.1287)C + (-1.0639A + 92.613)...(3D)$$

(Supplementary Description 22)

The working medium according to Supplementary Description 1, in which the working medium contains the propane, the 1,1,2-trifluoroethylene, the (E)-1,3,3,3-tetrafluoropropene, and the difluoromethane, and
in a case in which a content of the difluoromethane with respect to a total content of the propane, the 1,1,2-trifluoroethylene, the (E)-1,3,3,3-tetrafluoropropene, and the difluoromethane is designated as E% by mass, a content of the (E)-1,3,3,3-tetrafluoropropene with respect to the total content is designated as F% by mass, a content of the propane with respect to the total content is designated as G% by mass, and a content of the 1,1,2-trifluoroethylene with respect to the total content is designated as H% by mass, the E, the F, the G, and the H satisfy the following Formulas (4A) to (4D):

$$19 \leq E \leq 22...(4A)$$

$$-0.0577E^2 + 2.595E - 25.794 \leq F \leq -0.453E + 43.836...(4B)$$

$$2 \leq G \leq 0.030E + 23.40...(4C)$$

$$(0.0053E^2 - 0.1950E - 0.0880)G + (-0.0044E^2 - 0.6605E + 83.7959) \leq H \leq 0.0255G^2 + (-0.0042E^2 + 0.1577E - 2.8414)G + (-1.059E + 91.6916) \tag{4D}$$

(Supplementary Description 23)

The working medium according to Supplementary Description 1, in which the working medium contains the propane, the 1,1,2-trifluoroethylene, the $CO_2$, and the difluoromethane, and
in a case in which a content of the difluoromethane with respect to a total content of the propane, the 1,1,2-trifluoroethylene, the $CO_2$, and the difluoromethane is designated as J% by mass, a content of the $CO_2$ with respect to the total content is designated as K% by mass, a content of the propane with respect to the total content is designated as L% by mass, and a content of the 1,1,2-trifluoroethylene with respect to the total content is designated as M% by mass, the J, the K, the L, and the M satisfy the following Formulas (5A) to (5D):

$$19 \leq J \leq 22...(5A)$$

$$0.074J^2 - 3.2047J - 37.862 \leq K \leq 0.055J^2 - 2.2893J + 42.055...(5B)$$

$$1 \leq L \leq 0.2985K + 23.9...(5C)$$

$$(-0.00015J^2 + 0.0055J - 0.0637)L^2 + (0.0031J^2 - 0.1025J - 0.0673)L + (-0.0017J^2 - 1.0368J + 91.439) \leq M \leq (-0.000054J^2 + 0.00165J - 0.00500)L^2 + (0.0029J^2 - 0.1040J - 0.1186)L + (-0.1221J^2 + 4.1517J + 39.5) \tag{5D}$$

(Supplementary Description 24)

The working medium according to Supplementary Description 1, in which the working medium contains the propane, the 1,1,2-trifluoroethylene, the $CF_3I$, and the difluoromethane.

(Supplementary Description 25)

The working medium according to Supplementary Description 1, in which the working medium contains the propane, the 1,1,2-trifluoroethylene, and the 2,3,3,3-tetrafluoro-1-propene,

a content of the 2,3,3,3-tetrafluoro-1-propene is from 25.0% by mass to 70.0% by mass with respect to a total content of the propane, the 1,1,2-trifluoroethylene, and the 2,3,3,3-tetrafluoro-1-propene,
a content of the propane is 9.0% by mass or less with respect to the total content, and
the total content is 78.5% by mass or more with respect to a total amount of the working medium.

(Supplementary Description 26)

A composition for a heat cycle system, containing the working medium according to any one of Supplementary Descriptions 1 to 25 and a lubricating oil.

(Supplementary Description 27)

A heat cycle system using the working medium according to any one of Supplementary Descriptions 1 to 25.

(Supplementary Description 28)

A storage container of a composition, which is a sealed storage container into which a composition, which contains propane, at least one of 1,1,2-trifluoroethylene or (E)-1,2-difluoroethylene, and at least one selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene, is filled in such a state that a gas phase and a liquid phase coexist,

in which a combustion heat amount of the composition is less than 19.000 MJ/kg, and
a concentration of oxygen at a temperature of 25°C in the gas phase is 3000 ppm by volume or less.

(Supplementary Description 26)

A storage container of a composition, which is a sealed storage container into which a composition, which contains propane, at least one of 1,1,2-trifluoroethylene or (E)-1,2-difluoroethylene, at least one selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene, and water, is filled,

in which a combustion heat amount of the composition is less than 19.000 MJ/kg, and
a content of the water is 500 ppm by mass or less with respect to a total amount of the composition.

Examples

Hereinafter, the embodiment will be specifically described by way of Examples; however, the embodiment is not limited to these Examples. The composition of each Example is as described above.
The discharge temperature (Discharge Temperature (Difference)), the condensing pressure ((Relative) Condensing Pressure), the evaporating pressure ((Relative) Evaporating Pressure), CAP (performance per unit volume, (Relative) Capacity), and COP (coefficient of performance, (Relative) Coefficient of Performance) of the working medium were determined by the above methods. The temperature glide (Temperature Glide (Difference)) was determined by the following method. The obtained results are shown in Tables 503 to 713. In the table, "-" indicates that the evaluation has not been performed.
In the table, the unit of discharge temperature (Discharge Temperature (Difference)) and the temperature glide (Temperature Glide (Difference)) is "°C".

-Temperature Glide-

In the disclosure, the "temperature glide" was calculated as a difference between the evaporation initiation temperature and the evaporation completion temperature in the evaporator. In the disclosure, the difference from R410A is shown.

-CAP-

CAP, which is the refrigerating capacity per unit volume of the evaporator, was calculated as a product of the compressor suction saturated gas density and the evaporation latent heat. CAP, which is the refrigerating capacity per unit volume, is an output in the cycle system. In the disclosure, a relative coefficient of performance with respect to R410Ais shown.

-COP-

COP is a value obtained by dividing an output Q (kW) by power P (kW) consumed to obtain the output Q (kW), and corresponds to energy consumption efficiency. As the value of COP is higher, a larger output can be obtained with fewer inputs. In the disclosure, a relative coefficient of performance with respect to R410A is shown.

[Table 503]

| Case | Discharge Temperature (Difference) | (Relative) Condensing Pressure | (Relative) Evaporating Pressure | Temperature Glide (Difference) | (Relative) Capacity | (Relative) Coefficient of Performance |
|---|---|---|---|---|---|---|
| 1 | -27.84 | 0.55 | 0.58 | -0.09 | 0.58 | 1.05 |
| 2 | -25.78 | 0.62 | 0.66 | 2.71 | 0.67 | 1.09 |
| 3 | -24.16 | 0.68 | 0.74 | 5.23 | 0.74 | 1.10 |
| 4 | -23.02 | 0.75 | 0.81 | 7.10 | 0.80 | 1.09 |
| 5 | -22.36 | 0.82 | 0.89 | 8.07 | 0.85 | 1.06 |
| 6 | -22.21 | 0.89 | 0.97 | 7.94 | 0.90 | 1.03 |
| 7 | -22.63 | 0.98 | 1.06 | 6.58 | 0.95 | 0.99 |
| 8 | -23.70 | 1.07 | 1.17 | 4.08 | 1.00 | 0.95 |
| 9 | — | — | — | — | — | — |
| 10 | — | — | — | — | — | — |
| 11 | -24.72 | 1.14 | 1.24 | 2.05 | 1.03 | 0.93 |
| 12 | -24.86 | 1.14 | 1.25 | 1.78 | 1.04 | 0.93 |
| 13 | -24.98 | 1.15 | 1.26 | 1.53 | 1.04 | 0.93 |
| 14 | -25.10 | 1.16 | 1.27 | 1.29 | 1.05 | 0.93 |
| 15 | -25.20 | 1.17 | 1.28 | 1.07 | 1.05 | 0.92 |
| 16 | -25.29 | 1.18 | 1.29 | 0.86 | 1.06 | 0.92 |
| 17 | -25.36 | 1.18 | 1.30 | 0.68 | 1.06 | 0.92 |
| 18 | -25.42 | 1.19 | 1.30 | 0.51 | 1.06 | 0.92 |
| 19 | -25.45 | 1.20 | 1.31 | 0.37 | 1.07 | 0.92 |
| 20 | -25.48 | 1.20 | 1.32 | 0.25 | 1.07 | 0.92 |
| 21 | -25.48 | 1.21 | 1.32 | 0.15 | 1.08 | 0.92 |
| 22 | -25.47 | 1.21 | 1.33 | 0.07 | 1.08 | 0.92 |
| 23 | -25.44 | 1.22 | 1.33 | 0.01 | 1.08 | 0.91 |
| 24 | -25.40 | 1.22 | 1.33 | -0.03 | 1.09 | 0.91 |
| 25 | -25.34 | 1.22 | 1.34 | -0.06 | 1.09 | 0.91 |
| 26 | -25.28 | 1.23 | 1.34 | -0.08 | 1.09 | 0.91 |
| 27 | -25.20 | 1.23 | 1.34 | -0.09 | 1.10 | 0.92 |
| 28 | -25.12 | 1.23 | 1.34 | -0.08 | 1.10 | 0.92 |
| 29 | -25.03 | 1.23 | 1.34 | -0.08 | 1.10 | 0.92 |
| 30 | -24.94 | 1.23 | 1.33 | -0.07 | 1.10 | 0.92 |
| 31 | -24.84 | 1.23 | 1.33 | -0.06 | 1.10 | 0.92 |
| 32 | -24.75 | 1.23 | 1.33 | -0.06 | 1.11 | 0.92 |
| 33 | -24.65 | 1.22 | 1.32 | -0.07 | 1.11 | 0.92 |
| 34 | -24.56 | 1.22 | 1.32 | -0.09 | 1.11 | 0.92 |
| 35 | -24.50 | 1.11 | 1.21 | 2.71 | 1.01 | 0.94 |
| 36 | — | — | — | — | — | — |
| 37 | — | — | — | — | — | — |
| 38 | -24.62 | 1.12 | 1.22 | 2.45 | 1.02 | 0.94 |
| 39 | -24.65 | 1.12 | 1.22 | 2.41 | 1.02 | 0.94 |
| 40 | -24.85 | 1.13 | 1.24 | 1.96 | 1.03 | 0.93 |
| 41 | -24.96 | 1.14 | 1.25 | 1.74 | 1.03 | 0.93 |
| 42 | -25.04 | 1.15 | 1.25 | 1.53 | 1.04 | 0.93 |
| 43 | -25.12 | 1.16 | 1.26 | 1.34 | 1.04 | 0.93 |
| 44 | -25.18 | 1.16 | 1.27 | 1.17 | 1.05 | 0.93 |
| 45 | -25.23 | 1.17 | 1.28 | 1.01 | 1.05 | 0.92 |
| 46 | -25.26 | 1.18 | 1.28 | 0.88 | 1.06 | 0.92 |
| 47 | -25.27 | 1.18 | 1.29 | 0.77 | 1.06 | 0.92 |
| 48 | -25.27 | 1.19 | 1.30 | 0.68 | 1.06 | 0.92 |
| 49 | -25.26 | 1.19 | 1.30 | 0.60 | 1.07 | 0.92 |
| 50 | -25.23 | 1.20 | 1.30 | 0.54 | 1.07 | 0.92 |

[Table 504]

| | | | | | | |
|---|---|---|---|---|---|---|
| 51 | -25.18 | 1.20 | 1.31 | 0.50 | 1.07 | 0.92 |
| 52 | -25.13 | 1.20 | 1.31 | 0.48 | 1.08 | 0.92 |
| 53 | -25.06 | 1.21 | 1.31 | 0.46 | 1.08 | 0.92 |
| 54 | -24.99 | 1.21 | 1.31 | 0.45 | 1.08 | 0.92 |
| 55 | -24.91 | 1.21 | 1.31 | 0.46 | 1.09 | 0.92 |
| 56 | -24.82 | 1.21 | 1.31 | 0.46 | 1.09 | 0.92 |
| 57 | -24.73 | 1.21 | 1.31 | 0.47 | 1.09 | 0.92 |
| 58 | -24.64 | 1.21 | 1.30 | 0.47 | 1.09 | 0.92 |
| 59 | -24.55 | 1.21 | 1.30 | 0.47 | 1.09 | 0.92 |
| 60 | -24.46 | 1.20 | 1.30 | 0.46 | 1.09 | 0.93 |
| 61 | -24.37 | 1.20 | 1.29 | 0.44 | 1.09 | 0.93 |
| 62 | -24.43 | 1.09 | 1.19 | 3.07 | 1.00 | 0.94 |
| 63 | — | — | — | — | — | — |
| 64 | — | — | — | — | — | — |
| 65 | -24.54 | 1.10 | 1.20 | 2.83 | 1.01 | 0.94 |
| 66 | -24.65 | 1.11 | 1.20 | 2.60 | 1.01 | 0.94 |
| 67 | -24.75 | 1.11 | 1.21 | 2.38 | 1.02 | 0.94 |
| 68 | -24.83 | 1.12 | 1.22 | 2.17 | 1.02 | 0.93 |
| 69 | -24.91 | 1.13 | 1.23 | 1.97 | 1.03 | 0.93 |
| 70 | -24.97 | 1.14 | 1.24 | 1.79 | 1.03 | 0.93 |
| 71 | -25.03 | 1.14 | 1.25 | 1.63 | 1.04 | 0.93 |
| 72 | -25.06 | 1.15 | 1.25 | 1.49 | 1.04 | 0.93 |
| 73 | -25.09 | 1.16 | 1.26 | 1.37 | 1.04 | 0.93 |
| 74 | -25.10 | 1.16 | 1.26 | 1.26 | 1.05 | 0.93 |
| 75 | -25.09 | 1.17 | 1.27 | 1.18 | 1.05 | 0.92 |
| 76 | -25.07 | 1.17 | 1.27 | 1.11 | 1.06 | 0.92 |
| 77 | -25.04 | 1.18 | 1.28 | 1.06 | 1.06 | 0.92 |
| 78 | -24.99 | 1.18 | 1.28 | 1.02 | 1.06 | 0.92 |
| 79 | -24.93 | 1.18 | 1.28 | 0.99 | 1.06 | 0.92 |
| 80 | -24.87 | 1.18 | 1.28 | 0.98 | 1.07 | 0.92 |
| 81 | -24.79 | 1.19 | 1.28 | 0.97 | 1.07 | 0.92 |
| 82 | -24.72 | 1.19 | 1.28 | 0.98 | 1.07 | 0.92 |
| 83 | -24.63 | 1.19 | 1.28 | 0.98 | 1.07 | 0.92 |
| 84 | -24.54 | 1.19 | 1.28 | 0.98 | 1.08 | 0.93 |
| 85 | -24.45 | 1.19 | 1.28 | 0.99 | 1.08 | 0.93 |
| 86 | -24.37 | 1.19 | 1.27 | 0.98 | 1.08 | 0.93 |
| 87 | -24.28 | 1.18 | 1.27 | 0.97 | 1.08 | 0.93 |
| 88 | -24.20 | 1.18 | 1.26 | 0.94 | 1.08 | 0.93 |
| 89 | -24.41 | 1.08 | 1.18 | 3.24 | 1.00 | 0.95 |
| 90 | — | — | — | — | — | — |
| 91 | — | — | — | — | — | — |
| 92 | -24.51 | 1.09 | 1.18 | 3.01 | 1.00 | 0.94 |
| 93 | -24.61 | 1.10 | 1.19 | 2.79 | 1.01 | 0.94 |
| 94 | -24.70 | 1.10 | 1.20 | 2.57 | 1.01 | 0.94 |
| 95 | -24.78 | 1.11 | 1.21 | 2.37 | 1.02 | 0.94 |
| 96 | -24.85 | 1.12 | 1.22 | 2.19 | 1.02 | 0.94 |
| 97 | -24.91 | 1.13 | 1.23 | 2.01 | 1.03 | 0.93 |
| 98 | -24.96 | 1.13 | 1.23 | 1.86 | 1.03 | 0.93 |
| 99 | -24.99 | 1.14 | 1.24 | 1.72 | 1.03 | 0.93 |
| 100 | -25.01 | 1.15 | 1.25 | 1.60 | 1.04 | 0.93 |

[Table 505]

| | | | | | |
|---|---|---|---|---|---|
| 101 | -25.02 | 1.15 | 1.25 | 1.50 | 1.04 | 0.93 |
| 102 | -25.01 | 1.16 | 1.26 | 1.42 | 1.05 | 0.93 |
| 103 | -24.98 | 1.16 | 1.26 | 1.35 | 1.05 | 0.93 |
| 104 | -24.95 | 1.17 | 1.26 | 1.30 | 1.05 | 0.93 |
| 105 | -24.91 | 1.17 | 1.27 | 1.27 | 1.06 | 0.93 |
| 106 | -24.85 | 1.17 | 1.27 | 1.24 | 1.06 | 0.92 |
| 107 | -24.78 | 1.17 | 1.27 | 1.23 | 1.06 | 0.93 |
| 108 | -24.71 | 1.18 | 1.27 | 1.23 | 1.06 | 0.93 |
| 109 | -24.63 | 1.18 | 1.27 | 1.23 | 1.07 | 0.93 |
| 110 | -24.55 | 1.18 | 1.27 | 1.23 | 1.07 | 0.93 |
| 111 | -24.46 | 1.18 | 1.27 | 1.23 | 1.07 | 0.93 |
| 112 | -24.37 | 1.18 | 1.27 | 1.23 | 1.07 | 0.93 |
| 113 | -24.29 | 1.18 | 1.26 | 1.23 | 1.07 | 0.93 |
| 114 | -24.20 | 1.17 | 1.26 | 1.21 | 1.07 | 0.93 |
| 115 | -24.13 | 1.17 | 1.25 | 1.18 | 1.07 | 0.93 |
| 116 | -24.34 | 1.04 | 1.12 | 4.02 | 0.97 | 0.96 |
| 117 | ~~~ | ~~~ | ~~~ | ~~~ | ~~~ | ~~~ |
| 118 | ── | ── | ── | ── | ── | ── |
| 119 | -24.41 | 1.04 | 1.13 | 3.83 | 0.98 | 0.96 |
| 120 | -24.47 | 1.05 | 1.14 | 3.65 | 0.98 | 0.95 |
| 121 | -24.53 | 1.06 | 1.15 | 3.48 | 0.98 | 0.95 |
| 122 | -24.59 | 1.07 | 1.15 | 3.32 | 0.99 | 0.95 |
| 123 | -24.63 | 1.07 | 1.16 | 3.17 | 0.99 | 0.95 |
| 124 | -24.67 | 1.08 | 1.17 | 3.03 | 1.00 | 0.95 |
| 125 | -24.69 | 1.09 | 1.18 | 2.90 | 1.00 | 0.94 |
| 126 | -24.70 | 1.09 | 1.18 | 2.79 | 1.00 | 0.94 |
| 127 | -24.71 | 1.10 | 1.19 | 2.70 | 1.01 | 0.94 |
| 128 | -24.70 | 1.10 | 1.19 | 2.62 | 1.01 | 0.94 |
| 129 | -24.67 | 1.11 | 1.20 | 2.55 | 1.01 | 0.94 |
| 130 | -24.64 | 1.11 | 1.20 | 2.50 | 1.02 | 0.94 |
| 131 | -24.60 | 1.12 | 1.20 | 2.46 | 1.02 | 0.94 |
| 132 | -24.55 | 1.12 | 1.21 | 2.44 | 1.02 | 0.94 |
| 133 | -24.49 | 1.12 | 1.21 | 2.42 | 1.03 | 0.94 |
| 134 | -24.43 | 1.12 | 1.21 | 2.41 | 1.03 | 0.94 |
| 135 | -24.35 | 1.13 | 1.21 | 2.41 | 1.03 | 0.94 |
| 136 | -24.28 | 1.13 | 1.21 | 2.41 | 1.03 | 0.94 |
| 137 | -24.20 | 1.13 | 1.21 | 2.41 | 1.04 | 0.94 |
| 138 | -24.12 | 1.13 | 1.21 | 2.41 | 1.04 | 0.94 |
| 139 | -24.04 | 1.13 | 1.20 | 2.40 | 1.04 | 0.94 |
| 140 | -23.96 | 1.13 | 1.20 | 2.39 | 1.04 | 0.94 |
| 141 | -23.89 | 1.12 | 1.19 | 2.37 | 1.04 | 0.94 |
| 142 | -23.82 | 1.12 | 1.19 | 2.33 | 1.04 | 0.94 |
| 143 | -24.36 | 0.99 | 1.07 | 4.67 | 0.94 | 0.97 |
| 144 | — | — | — | — | — | — |
| 145 | — | — | — | — | — | — |
| 146 | -24.40 | 1.00 | 1.08 | 4.53 | 0.95 | 0.97 |
| 147 | -24.44 | 1.01 | 1.09 | 4.39 | 0.95 | 0.97 |
| 148 | -24.48 | 1.01 | 1.09 | 4.25 | 0.96 | 0.97 |
| 149 | -24.50 | 1.02 | 1.10 | 4.13 | 0.96 | 0.96 |
| 150 | -24.52 | 1.03 | 1.11 | 4.01 | 0.96 | 0.96 |

[Table 506]

| 151 | -24.54 | 1.03 | 1.11 | 3.90 | 0.97 | 0.96 |
|---|---|---|---|---|---|---|
| 152 | -24.54 | 1.04 | 1.12 | 3.81 | 0.97 | 0.96 |
| 153 | -24.54 | 1.05 | 1.12 | 3.73 | 0.98 | 0.95 |
| 154 | -24.52 | 1.05 | 1.13 | 3.65 | 0.98 | 0.95 |
| 155 | -24.50 | 1.06 | 1.13 | 3.60 | 0.98 | 0.95 |
| 156 | -24.47 | 1.06 | 1.14 | 3.55 | 0.98 | 0.95 |
| 157 | -24.43 | 1.06 | 1.14 | 3.51 | 0.99 | 0.95 |
| 158 | -24.38 | 1.07 | 1.14 | 3.49 | 0.99 | 0.95 |
| 159 | -24.32 | 1.07 | 1.15 | 3.47 | 0.99 | 0.95 |
| 160 | -24.26 | 1.07 | 1.15 | 3.46 | 1.00 | 0.95 |
| 161 | -24.20 | 1.08 | 1.15 | 3.46 | 1.00 | 0.95 |
| 162 | -24.13 | 1.08 | 1.15 | 3.46 | 1.00 | 0.95 |
| 163 | -24.05 | 1.08 | 1.15 | 3.46 | 1.00 | 0.95 |
| 164 | -23.98 | 1.08 | 1.15 | 3.46 | 1.00 | 0.95 |
| 165 | -23.91 | 1.08 | 1.15 | 3.46 | 1.00 | 0.95 |
| 166 | -23.83 | 1.08 | 1.14 | 3.45 | 1.01 | 0.95 |
| 167 | -23.77 | 1.08 | 1.14 | 3.43 | 1.01 | 0.95 |
| 168 | -23.70 | 1.07 | 1.14 | 3.40 | 1.01 | 0.95 |
| 169 | -23.65 | 1.07 | 1.13 | 3.35 | 1.00 | 0.96 |
| 170 | -24.48 | 0.95 | 1.02 | 5.19 | 0.92 | 0.99 |
| 171 | ---- | ---- | ---- | ---- | ---- | ---- |
| 172 | -24.49 | 0.96 | 1.03 | 5.09 | 0.92 | 0.98 |
| 173 | -24.51 | 0.96 | 1.04 | 4.99 | 0.92 | 0.98 |
| 174 | -24.52 | 0.97 | 1.04 | 4.89 | 0.93 | 0.98 |
| 175 | -24.52 | 0.98 | 1.05 | 4.80 | 0.93 | 0.98 |
| 176 | -24.52 | 0.98 | 1.06 | 4.72 | 0.94 | 0.97 |
| 177 | -24.52 | 0.99 | 1.06 | 4.64 | 0.94 | 0.97 |
| 178 | -24.50 | 0.99 | 1.07 | 4.58 | 0.94 | 0.97 |
| 179 | -24.48 | 1.00 | 1.07 | 4.52 | 0.95 | 0.97 |
| 180 | -24.46 | 1.00 | 1.08 | 4.47 | 0.95 | 0.97 |
| 181 | -24.42 | 1.01 | 1.08 | 4.44 | 0.95 | 0.96 |
| 182 | -24.38 | 1.01 | 1.08 | 4.41 | 0.96 | 0.96 |
| 183 | -24.33 | 1.02 | 1.09 | 4.39 | 0.96 | 0.96 |
| 184 | -24.28 | 1.02 | 1.09 | 4.38 | 0.96 | 0.96 |
| 185 | -24.22 | 1.02 | 1.09 | 4.37 | 0.96 | 0.96 |
| 186 | -24.15 | 1.03 | 1.09 | 4.37 | 0.97 | 0.96 |
| 187 | -24.09 | 1.03 | 1.09 | 4.37 | 0.97 | 0.96 |
| 188 | -24.02 | 1.03 | 1.09 | 4.38 | 0.97 | 0.96 |
| 189 | -23.94 | 1.03 | 1.09 | 4.38 | 0.97 | 0.96 |
| 190 | -23.87 | 1.03 | 1.09 | 4.38 | 0.97 | 0.96 |
| 191 | -23.81 | 1.03 | 1.09 | 4.38 | 0.97 | 0.96 |
| 192 | -23.74 | 1.03 | 1.09 | 4.37 | 0.97 | 0.96 |
| 193 | -23.68 | 1.03 | 1.08 | 4.34 | 0.97 | 0.96 |
| 194 | -23.63 | 1.03 | 1.08 | 4.30 | 0.97 | 0.97 |
| 195 | -23.58 | 1.02 | 1.07 | 4.24 | 0.97 | 0.97 |
| 196 | -24.67 | 0.92 | 0.98 | 5.51 | 0.89 | 1.00 |
| 197 | — | — | — | — | — | — |
| 198 | -24.67 | 0.92 | 0.99 | 5.45 | 0.90 | 0.99 |
| 199 | -24.66 | 0.93 | 0.99 | 5.39 | 0.90 | 0.99 |
| 200 | -24.64 | 0.93 | 1.00 | 5.34 | 0.90 | 0.99 |

[Table 507]

| | | | | | | |
|---|---|---|---|---|---|---|
| 201 | -24.62 | 0.94 | 1.00 | 5.29 | 0.91 | 0.99 |
| 202 | -24.60 | 0.95 | 1.01 | 5.24 | 0.91 | 0.98 |
| 203 | -24.57 | 0.95 | 1.02 | 5.21 | 0.91 | 0.98 |
| 204 | -24.54 | 0.96 | 1.02 | 5.18 | 0.92 | 0.98 |
| 205 | -24.49 | 0.96 | 1.02 | 5.16 | 0.92 | 0.98 |
| 206 | -24.45 | 0.96 | 1.03 | 5.14 | 0.92 | 0.98 |
| 207 | -24.40 | 0.97 | 1.03 | 5.13 | 0.93 | 0.98 |
| 208 | -24.34 | 0.97 | 1.03 | 5.13 | 0.93 | 0.98 |
| 209 | -24.28 | 0.98 | 1.04 | 5.13 | 0.93 | 0.97 |
| 210 | -24.22 | 0.98 | 1.04 | 5.14 | 0.93 | 0.97 |
| 211 | -24.15 | 0.98 | 1.04 | 5.15 | 0.94 | 0.97 |
| 212 | -24.08 | 0.98 | 1.04 | 5.16 | 0.94 | 0.97 |
| 213 | -24.01 | 0.98 | 1.04 | 5.17 | 0.94 | 0.97 |
| 214 | -23.95 | 0.99 | 1.04 | 5.18 | 0.94 | 0.97 |
| 215 | -23.88 | 0.99 | 1.04 | 5.18 | 0.94 | 0.97 |
| 216 | -23.81 | 0.99 | 1.04 | 5.17 | 0.94 | 0.97 |
| 217 | -23.75 | 0.98 | 1.03 | 5.16 | 0.94 | 0.98 |
| 218 | -23.70 | 0.98 | 1.03 | 5.13 | 0.94 | 0.98 |
| 219 | -23.65 | 0.98 | 1.03 | 5.08 | 0.94 | 0.98 |
| 220 | -23.62 | 0.98 | 1.02 | 5.02 | 0.94 | 0.98 |
| 221 | -24.94 | 0.87 | 0.93 | 5.79 | 0.86 | 1.01 |
| 222 | — | — | — | — | — | — |
| 223 | — | — | — | — | — | — |
| 224 | -24.91 | 0.88 | 0.94 | 5.77 | 0.87 | 1.01 |
| 225 | -24.88 | 0.89 | 0.95 | 5.75 | 0.87 | 1.00 |
| 226 | -24.85 | 0.89 | 0.95 | 5.73 | 0.87 | 1.00 |
| 227 | -24.81 | 0.90 | 0.96 | 5.72 | 0.88 | 1.00 |
| 228 | -24.77 | 0.90 | 0.96 | 5.71 | 0.88 | 1.00 |
| 229 | -24.73 | 0.91 | 0.97 | 5.70 | 0.88 | 1.00 |
| 230 | -24.68 | 0.91 | 0.97 | 5.70 | 0.89 | 0.99 |
| 231 | -24.63 | 0.92 | 0.97 | 5.70 | 0.89 | 0.99 |
| 232 | -24.57 | 0.92 | 0.98 | 5.71 | 0.89 | 0.99 |
| 233 | -24.52 | 0.93 | 0.98 | 5.72 | 0.90 | 0.99 |
| 234 | -24.45 | 0.93 | 0.98 | 5.73 | 0.90 | 0.99 |
| 235 | -24.39 | 0.93 | 0.99 | 5.75 | 0.90 | 0.99 |
| 236 | -24.32 | 0.94 | 0.99 | 5.77 | 0.90 | 0.99 |
| 237 | -24.25 | 0.94 | 0.99 | 5.79 | 0.91 | 0.99 |
| 238 | -24.18 | 0.94 | 0.99 | 5.81 | 0.91 | 0.99 |
| 239 | -24.11 | 0.94 | 0.99 | 5.83 | 0.91 | 0.99 |
| 240 | -24.04 | 0.94 | 0.99 | 5.84 | 0.91 | 0.99 |
| 241 | -23.98 | 0.94 | 0.99 | 5.85 | 0.91 | 0.99 |
| 242 | -23.92 | 0.94 | 0.99 | 5.84 | 0.91 | 0.99 |
| 243 | -23.86 | 0.94 | 0.98 | 5.83 | 0.91 | 0.99 |
| 244 | -23.82 | 0.94 | 0.98 | 5.79 | 0.91 | 0.99 |
| 245 | -23.78 | 0.94 | 0.97 | 5.74 | 0.91 | 0.99 |
| 246 | -23.75 | 0.93 | 0.97 | 5.66 | 0.91 | 0.99 |
| 247 | -25.29 | 0.84 | 0.89 | 5.94 | 0.83 | 1.02 |
| 248 | — | — | — | — | — | — |
| 249 | — | — | — | — | — | — |
| 250 | -25.25 | 0.84 | 0.90 | 5.95 | 0.84 | 1.02 |

[Table 508]

| 251 | -25.20 | 0.85 | 0.90 | 5.97 | 0.84 | 1.02 |
|-----|--------|------|------|------|------|------|
| 252 | -25.15 | 0.85 | 0.91 | 5.99 | 0.85 | 1.01 |
| 253 | -25.10 | 0.86 | 0.91 | 6.00 | 0.85 | 1.01 |
| 254 | -25.04 | 0.86 | 0.91 | 6.02 | 0.85 | 1.01 |
| 255 | -24.99 | 0.87 | 0.92 | 6.05 | 0.86 | 1.01 |
| 256 | -24.93 | 0.87 | 0.92 | 6.07 | 0.86 | 1.01 |
| 257 | -24.86 | 0.88 | 0.93 | 6.10 | 0.86 | 1.00 |
| 258 | -24.80 | 0.88 | 0.93 | 6.13 | 0.86 | 1.00 |
| 259 | -24.73 | 0.88 | 0.93 | 6.16 | 0.87 | 1.00 |
| 260 | -24.66 | 0.89 | 0.94 | 6.20 | 0.87 | 1.00 |
| 261 | -24.59 | 0.89 | 0.94 | 6.23 | 0.87 | 1.00 |
| 262 | -24.52 | 0.89 | 0.94 | 6.27 | 0.87 | 1.00 |
| 263 | -24.44 | 0.89 | 0.94 | 6.30 | 0.88 | 1.00 |
| 264 | -24.37 | 0.90 | 0.94 | 6.33 | 0.88 | 1.00 |
| 265 | -24.30 | 0.90 | 0.94 | 6.36 | 0.88 | 1.00 |
| 266 | -24.23 | 0.90 | 0.94 | 6.38 | 0.88 | 1.00 |
| 267 | -24.17 | 0.90 | 0.94 | 6.39 | 0.88 | 1.00 |
| 268 | -24.12 | 0.90 | 0.94 | 6.38 | 0.88 | 1.00 |
| 269 | -24.06 | 0.90 | 0.93 | 6.36 | 0.88 | 1.00 |
| 270 | -24.02 | 0.89 | 0.93 | 6.33 | 0.88 | 1.00 |
| 271 | -23.99 | 0.89 | 0.93 | 6.27 | 0.88 | 1.00 |
| 272 | -23.97 | 0.89 | 0.92 | 6.19 | 0.88 | 1.00 |
| 273 | -25.74 | 0.80 | 0.85 | 5.94 | 0.80 | 1.03 |
| 274 | – | – | – | – | – | – |
| 275 | – | – | – | – | – | – |
| 276 | -25.67 | 0.80 | 0.85 | 5.99 | 0.81 | 1.03 |
| 277 | -25.61 | 0.81 | 0.86 | 6.04 | 0.81 | 1.03 |
| 278 | -25.54 | 0.81 | 0.86 | 6.09 | 0.82 | 1.02 |
| 279 | -25.47 | 0.82 | 0.87 | 6.15 | 0.82 | 1.02 |
| 280 | -25.40 | 0.82 | 0.87 | 6.20 | 0.82 | 1.02 |
| 281 | -25.33 | 0.83 | 0.87 | 6.25 | 0.83 | 1.02 |
| 282 | -25.26 | 0.83 | 0.88 | 6.31 | 0.83 | 1.02 |
| 283 | -25.19 | 0.84 | 0.88 | 6.36 | 0.83 | 1.02 |
| 284 | -25.11 | 0.84 | 0.88 | 6.41 | 0.83 | 1.02 |
| 285 | -25.03 | 0.84 | 0.89 | 6.47 | 0.84 | 1.01 |
| 286 | -24.96 | 0.85 | 0.89 | 6.52 | 0.84 | 1.01 |
| 287 | -24.88 | 0.85 | 0.89 | 6.58 | 0.84 | 1.01 |
| 288 | -24.80 | 0.85 | 0.89 | 6.63 | 0.84 | 1.01 |
| 289 | -24.73 | 0.85 | 0.89 | 6.68 | 0.85 | 1.01 |
| 290 | -24.65 | 0.85 | 0.89 | 6.72 | 0.85 | 1.01 |
| 291 | -24.58 | 0.86 | 0.89 | 6.75 | 0.85 | 1.01 |
| 292 | -24.52 | 0.86 | 0.89 | 6.78 | 0.85 | 1.01 |
| 293 | -24.46 | 0.86 | 0.89 | 6.79 | 0.85 | 1.01 |
| 294 | -24.40 | 0.86 | 0.89 | 6.79 | 0.85 | 1.01 |
| 295 | -24.36 | 0.85 | 0.89 | 6.77 | 0.85 | 1.01 |
| 296 | -24.32 | 0.85 | 0.88 | 6.74 | 0.85 | 1.01 |
| 297 | -24.30 | 0.85 | 0.88 | 6.68 | 0.85 | 1.02 |
| 298 | -24.29 | 0.85 | 0.87 | 6.59 | 0.85 | 1.02 |
| 299 | -26.27 | 0.76 | 0.80 | 5.78 | 0.77 | 1.04 |
| 300 | – | – | – | – | – | – |

[Table 509]

| | | | | | | |
|---|---|---|---|---|---|---|
| 301 | — | — | — | — | — | — |
| 302 | -26.19 | 0.76 | 0.81 | 5.88 | 0.78 | 1.04 |
| 303 | -26.10 | 0.77 | 0.81 | 5.97 | 0.78 | 1.04 |
| 304 | -26.02 | 0.77 | 0.82 | 6.05 | 0.78 | 1.04 |
| 305 | -25.94 | 0.78 | 0.82 | 6.14 | 0.79 | 1.03 |
| 306 | -25.86 | 0.78 | 0.83 | 6.22 | 0.79 | 1.03 |
| 307 | -25.77 | 0.79 | 0.83 | 6.31 | 0.79 | 1.03 |
| 308 | -25.69 | 0.79 | 0.83 | 6.39 | 0.80 | 1.03 |
| 309 | -25.60 | 0.80 | 0.84 | 6.47 | 0.80 | 1.03 |
| 310 | -25.52 | 0.80 | 0.84 | 6.55 | 0.80 | 1.03 |
| 311 | -25.43 | 0.80 | 0.84 | 6.63 | 0.81 | 1.03 |
| 312 | -25.35 | 0.81 | 0.84 | 6.71 | 0.81 | 1.02 |
| 313 | -25.27 | 0.81 | 0.85 | 6.78 | 0.81 | 1.02 |
| 314 | -25.19 | 0.81 | 0.85 | 6.85 | 0.81 | 1.02 |
| 315 | -25.10 | 0.81 | 0.85 | 6.91 | 0.81 | 1.02 |
| 316 | -25.03 | 0.81 | 0.85 | 6.96 | 0.82 | 1.02 |
| 317 | -24.96 | 0.81 | 0.85 | 7.01 | 0.82 | 1.02 |
| 318 | -24.89 | 0.81 | 0.85 | 7.04 | 0.82 | 1.02 |
| 319 | -24.83 | 0.81 | 0.85 | 7.06 | 0.82 | 1.02 |
| 320 | -24.78 | 0.81 | 0.84 | 7.07 | 0.82 | 1.02 |
| 321 | -24.74 | 0.81 | 0.84 | 7.05 | 0.82 | 1.03 |
| 322 | -24.71 | 0.81 | 0.84 | 7.01 | 0.82 | 1.03 |
| 323 | -24.69 | 0.81 | 0.83 | 6.95 | 0.82 | 1.03 |
| 324 | -24.68 | 0.81 | 0.83 | 6.86 | 0.81 | 1.03 |
| 325 | -26.90 | 0.72 | 0.76 | 5.48 | 0.74 | 1.05 |
| 326 | — | — | — | — | — | — |
| 327 | — | — | — | — | — | — |
| 328 | -26.80 | 0.73 | 0.77 | 5.61 | 0.75 | 1.05 |
| 329 | -26.70 | 0.73 | 0.77 | 5.74 | 0.75 | 1.05 |
| 330 | -26.60 | 0.74 | 0.77 | 5.86 | 0.75 | 1.04 |
| 331 | -26.50 | 0.74 | 0.78 | 5.98 | 0.76 | 1.04 |
| 332 | -26.40 | 0.75 | 0.78 | 6.10 | 0.76 | 1.04 |
| 333 | -26.31 | 0.75 | 0.79 | 6.21 | 0.76 | 1.04 |
| 334 | -26.21 | 0.75 | 0.79 | 6.32 | 0.77 | 1.04 |
| 335 | -26.11 | 0.76 | 0.79 | 6.43 | 0.77 | 1.04 |
| 336 | -26.02 | 0.76 | 0.80 | 6.54 | 0.77 | 1.04 |
| 337 | -25.92 | 0.76 | 0.80 | 6.64 | 0.77 | 1.04 |
| 338 | -25.83 | 0.77 | 0.80 | 6.74 | 0.78 | 1.04 |
| 339 | -25.74 | 0.77 | 0.80 | 6.83 | 0.78 | 1.04 |
| 340 | -25.66 | 0.77 | 0.80 | 6.92 | 0.78 | 1.04 |
| 341 | -25.57 | 0.77 | 0.80 | 7.00 | 0.78 | 1.03 |
| 342 | -25.49 | 0.77 | 0.80 | 7.06 | 0.78 | 1.03 |
| 343 | -25.42 | 0.77 | 0.80 | 7.12 | 0.79 | 1.04 |
| 344 | -25.35 | 0.78 | 0.80 | 7.16 | 0.79 | 1.04 |
| 345 | -25.29 | 0.78 | 0.80 | 7.19 | 0.79 | 1.04 |
| 346 | -25.24 | 0.77 | 0.80 | 7.20 | 0.79 | 1.04 |
| 347 | -25.20 | 0.77 | 0.80 | 7.19 | 0.79 | 1.04 |
| 348 | -25.18 | 0.77 | 0.79 | 7.15 | 0.79 | 1.04 |
| 349 | -25.16 | 0.77 | 0.79 | 7.09 | 0.78 | 1.04 |
| 350 | -25.17 | 0.77 | 0.78 | 6.99 | 0.78 | 1.04 |

[Table 510]

| 351 | -27.63 | 0.69 | 0.72 | 5.02 | 0.71 | 1.05 |
|---|---|---|---|---|---|---|
| 352 | – | – | – | – | – | – |
| 353 | – | – | – | – | – | – |
| 354 | -27.51 | 0.69 | 0.72 | 5.19 | 0.71 | 1.05 |
| 355 | -27.39 | 0.69 | 0.73 | 5.35 | 0.72 | 1.05 |
| 356 | -27.27 | 0.70 | 0.73 | 5.51 | 0.72 | 1.05 |
| 357 | -27.16 | 0.70 | 0.74 | 5.66 | 0.72 | 1.05 |
| 358 | -27.05 | 0.71 | 0.74 | 5.81 | 0.73 | 1.05 |
| 359 | -26.94 | 0.71 | 0.74 | 5.96 | 0.73 | 1.05 |
| 360 | -26.83 | 0.72 | 0.75 | 6.10 | 0.73 | 1.05 |
| 361 | -26.72 | 0.72 | 0.75 | 6.24 | 0.74 | 1.05 |
| 362 | -26.61 | 0.72 | 0.75 | 6.37 | 0.74 | 1.05 |
| 363 | -26.51 | 0.73 | 0.75 | 6.50 | 0.74 | 1.05 |
| 364 | -26.41 | 0.73 | 0.76 | 6.62 | 0.75 | 1.05 |
| 365 | -26.31 | 0.73 | 0.76 | 6.73 | 0.75 | 1.05 |
| 366 | -26.22 | 0.73 | 0.76 | 6.84 | 0.75 | 1.05 |
| 367 | -26.13 | 0.73 | 0.76 | 6.93 | 0.75 | 1.05 |
| 368 | -26.05 | 0.74 | 0.76 | 7.02 | 0.75 | 1.05 |
| 369 | -25.97 | 0.74 | 0.76 | 7.09 | 0.75 | 1.05 |
| 370 | -25.90 | 0.74 | 0.76 | 7.14 | 0.76 | 1.05 |
| 371 | -25.84 | 0.74 | 0.76 | 7.18 | 0.76 | 1.05 |
| 372 | -25.79 | 0.74 | 0.76 | 7.19 | 0.76 | 1.05 |
| 373 | -25.76 | 0.73 | 0.75 | 7.19 | 0.76 | 1.05 |
| 374 | -25.73 | 0.73 | 0.75 | 7.15 | 0.75 | 1.05 |
| 375 | -25.72 | 0.73 | 0.75 | 7.09 | 0.75 | 1.05 |
| 376 | -25.74 | 0.73 | 0.74 | 6.99 | 0.75 | 1.05 |
| 377 | -28.47 | 0.65 | 0.68 | 4.40 | 0.67 | 1.06 |
| 378 | – | – | – | – | – | – |
| 379 | – | – | – | – | – | – |
| 380 | -28.33 | 0.65 | 0.68 | 4.60 | 0.68 | 1.06 |
| 381 | -28.19 | 0.66 | 0.69 | 4.80 | 0.68 | 1.06 |
| 382 | -28.06 | 0.66 | 0.69 | 4.99 | 0.69 | 1.06 |
| 383 | -27.93 | 0.67 | 0.69 | 5.18 | 0.69 | 1.06 |
| 384 | -27.80 | 0.67 | 0.70 | 5.37 | 0.69 | 1.06 |
| 385 | -27.67 | 0.67 | 0.70 | 5.54 | 0.70 | 1.05 |
| 386 | -27.55 | 0.68 | 0.71 | 5.72 | 0.70 | 1.05 |
| 387 | -27.43 | 0.68 | 0.71 | 5.88 | 0.70 | 1.05 |
| 388 | -27.31 | 0.68 | 0.71 | 6.04 | 0.71 | 1.05 |
| 389 | -27.20 | 0.69 | 0.71 | 6.20 | 0.71 | 1.05 |
| 390 | -27.08 | 0.69 | 0.72 | 6.34 | 0.71 | 1.05 |
| 391 | -26.98 | 0.69 | 0.72 | 6.48 | 0.72 | 1.05 |
| 392 | -26.88 | 0.69 | 0.72 | 6.60 | 0.72 | 1.05 |
| 393 | -26.78 | 0.70 | 0.72 | 6.72 | 0.72 | 1.05 |
| 394 | -26.70 | 0.70 | 0.72 | 6.82 | 0.72 | 1.05 |
| 395 | -26.62 | 0.70 | 0.72 | 6.90 | 0.72 | 1.06 |
| 396 | -26.54 | 0.70 | 0.72 | 6.97 | 0.72 | 1.06 |
| 397 | -26.48 | 0.70 | 0.72 | 7.01 | 0.72 | 1.06 |
| 398 | -26.43 | 0.70 | 0.72 | 7.04 | 0.72 | 1.06 |
| 399 | -26.40 | 0.70 | 0.71 | 7.04 | 0.72 | 1.06 |
| 400 | -26.38 | 0.70 | 0.71 | 7.00 | 0.72 | 1.06 |

[Table 511]

| 401 | -26.38 | 0.69 | 0.71 | 6.94 | 0.72 | 1.06 |
| 402 | -26.39 | 0.69 | 0.70 | 6.84 | 0.72 | 1.06 |
| 403 | -29.44 | 0.61 | 0.64 | 3.62 | 0.63 | 1.06 |
| 404 | – | – | – | – | – | – |
| 405 | – | – | – | – | – | – |
| 406 | -29.28 | 0.62 | 0.64 | 3.86 | 0.64 | 1.06 |
| 407 | -29.12 | 0.62 | 0.64 | 4.09 | 0.64 | 1.06 |
| 408 | -28.96 | 0.63 | 0.65 | 4.32 | 0.65 | 1.06 |
| 409 | -28.81 | 0.63 | 0.65 | 4.54 | 0.65 | 1.06 |
| 410 | -28.67 | 0.63 | 0.66 | 4.76 | 0.66 | 1.06 |
| 411 | -28.52 | 0.64 | 0.66 | 4.97 | 0.66 | 1.06 |
| 412 | -28.38 | 0.64 | 0.66 | 5.17 | 0.67 | 1.06 |
| 413 | -28.25 | 0.64 | 0.67 | 5.36 | 0.67 | 1.06 |
| 414 | -28.12 | 0.65 | 0.67 | 5.55 | 0.67 | 1.06 |
| 415 | -27.99 | 0.65 | 0.67 | 5.73 | 0.68 | 1.06 |
| 416 | -27.87 | 0.65 | 0.67 | 5.90 | 0.68 | 1.06 |
| 417 | -27.75 | 0.66 | 0.68 | 6.06 | 0.68 | 1.06 |
| 418 | -27.64 | 0.66 | 0.68 | 6.21 | 0.68 | 1.06 |
| 419 | -27.54 | 0.66 | 0.68 | 6.34 | 0.69 | 1.06 |
| 420 | -27.44 | 0.66 | 0.68 | 6.46 | 0.69 | 1.06 |
| 421 | -27.36 | 0.66 | 0.68 | 6.56 | 0.69 | 1.06 |
| 422 | -27.29 | 0.66 | 0.68 | 6.64 | 0.69 | 1.06 |
| 423 | -27.22 | 0.66 | 0.68 | 6.69 | 0.69 | 1.06 |
| 424 | -27.17 | 0.66 | 0.67 | 6.73 | 0.69 | 1.07 |
| 425 | -27.14 | 0.66 | 0.67 | 6.73 | 0.69 | 1.07 |
| 426 | -27.12 | 0.66 | 0.67 | 6.70 | 0.69 | 1.07 |
| 427 | -27.12 | 0.66 | 0.67 | 6.64 | 0.69 | 1.07 |
| 428 | -27.14 | 0.65 | 0.66 | 6.54 | 0.68 | 1.07 |
| 429 | -30.54 | 0.58 | 0.59 | 2.69 | 0.60 | 1.05 |
| 430 | – | – | – | – | – | – |
| 431 | – | – | – | – | – | – |
| 432 | -30.36 | 0.58 | 0.60 | 2.96 | 0.60 | 1.05 |
| 433 | -30.17 | 0.59 | 0.60 | 3.22 | 0.61 | 1.05 |
| 434 | -30.00 | 0.59 | 0.61 | 3.48 | 0.61 | 1.06 |
| 435 | -29.82 | 0.59 | 0.61 | 3.74 | 0.62 | 1.06 |
| 436 | -29.66 | 0.60 | 0.62 | 3.98 | 0.62 | 1.06 |
| 437 | -29.49 | 0.60 | 0.62 | 4.22 | 0.63 | 1.06 |
| 438 | -29.34 | 0.61 | 0.62 | 4.45 | 0.63 | 1.06 |
| 439 | -29.18 | 0.61 | 0.63 | 4.68 | 0.63 | 1.06 |
| 440 | -29.04 | 0.61 | 0.63 | 4.89 | 0.64 | 1.06 |
| 441 | -28.90 | 0.61 | 0.63 | 5.10 | 0.64 | 1.06 |
| 442 | -28.76 | 0.62 | 0.63 | 5.29 | 0.64 | 1.06 |
| 443 | -28.64 | 0.62 | 0.63 | 5.47 | 0.65 | 1.06 |
| 444 | -28.52 | 0.62 | 0.64 | 5.64 | 0.65 | 1.07 |
| 445 | -28.40 | 0.62 | 0.64 | 5.80 | 0.65 | 1.07 |
| 446 | -28.30 | 0.62 | 0.64 | 5.93 | 0.65 | 1.07 |
| 447 | -28.21 | 0.62 | 0.64 | 6.05 | 0.65 | 1.07 |
| 448 | -28.13 | 0.63 | 0.64 | 6.14 | 0.66 | 1.07 |
| 449 | -28.06 | 0.63 | 0.64 | 6.21 | 0.66 | 1.07 |
| 450 | -28.01 | 0.62 | 0.63 | 6.25 | 0.66 | 1.07 |

[Table 512]

| 451 | -27.97 | 0.62 | 0.63 | 6.27 | 0.66 | 1.07 |
|---|---|---|---|---|---|---|
| 452 | -27.96 | 0.62 | 0.63 | 6.25 | 0.65 | 1.07 |
| 453 | -27.96 | 0.62 | 0.63 | 6.19 | 0.65 | 1.07 |
| 454 | -27.99 | 0.62 | 0.62 | 6.09 | 0.65 | 1.07 |
| 455 | -31.80 | 0.54 | 0.55 | 1.63 | 0.55 | 1.04 |
| 456 | – | – | – | – | – | – |
| 457 | – | – | – | – | – | – |
| 458 | -31.59 | 0.55 | 0.56 | 1.92 | 0.56 | 1.04 |
| 459 | -31.38 | 0.55 | 0.56 | 2.21 | 0.57 | 1.05 |
| 460 | -31.18 | 0.55 | 0.56 | 2.50 | 0.57 | 1.05 |
| 461 | -30.98 | 0.56 | 0.57 | 2.78 | 0.58 | 1.05 |
| 462 | -30.79 | 0.56 | 0.57 | 3.05 | 0.58 | 1.05 |
| 463 | -30.60 | 0.57 | 0.58 | 3.32 | 0.59 | 1.06 |
| 464 | -30.43 | 0.57 | 0.58 | 3.58 | 0.59 | 1.06 |
| 465 | -30.25 | 0.57 | 0.58 | 3.83 | 0.60 | 1.06 |
| 466 | -30.09 | 0.58 | 0.59 | 4.07 | 0.60 | 1.06 |
| 467 | -29.93 | 0.58 | 0.59 | 4.30 | 0.60 | 1.06 |
| 468 | -29.78 | 0.58 | 0.59 | 4.52 | 0.61 | 1.06 |
| 469 | -29.64 | 0.58 | 0.59 | 4.72 | 0.61 | 1.07 |
| 470 | -29.51 | 0.59 | 0.60 | 4.91 | 0.61 | 1.07 |
| 471 | -29.39 | 0.59 | 0.60 | 5.08 | 0.62 | 1.07 |
| 472 | -29.27 | 0.59 | 0.60 | 5.24 | 0.62 | 1.07 |
| 473 | -29.18 | 0.59 | 0.60 | 5.37 | 0.62 | 1.07 |
| 474 | -29.09 | 0.59 | 0.60 | 5.48 | 0.62 | 1.07 |
| 475 | -29.02 | 0.59 | 0.60 | 5.56 | 0.62 | 1.07 |
| 476 | -28.96 | 0.59 | 0.60 | 5.62 | 0.62 | 1.08 |
| 477 | -28.92 | 0.59 | 0.59 | 5.64 | 0.62 | 1.08 |
| 478 | -28.91 | 0.59 | 0.59 | 5.62 | 0.62 | 1.08 |
| 479 | -28.91 | 0.58 | 0.59 | 5.57 | 0.62 | 1.08 |
| 480 | -28.94 | 0.58 | 0.58 | 5.47 | 0.61 | 1.08 |
| 481 | – | – | – | – | – | – |
| 482 | – | – | – | – | – | – |
| 483 | -32.41 | 0.52 | 0.53 | 1.24 | 0.53 | 1.04 |
| 484 | -32.47 | 0.52 | 0.53 | 1.31 | 0.53 | 1.04 |
| 485 | -24.28 | 1.08 | 1.17 | 3.30 | 1.00 | 0.95 |
| 486 | – | – | – | – | – | – |
| 487 | – | – | – | – | – | – |
| 488 | -24.39 | 1.09 | 1.18 | 3.07 | 1.00 | 0.94 |
| 489 | -24.48 | 1.10 | 1.19 | 2.85 | 1.01 | 0.94 |
| 490 | -24.57 | 1.11 | 1.20 | 2.64 | 1.01 | 0.94 |
| 491 | -24.65 | 1.11 | 1.21 | 2.44 | 1.02 | 0.94 |
| 492 | -24.72 | 1.12 | 1.22 | 2.25 | 1.02 | 0.94 |
| 493 | -24.78 | 1.13 | 1.23 | 2.08 | 1.03 | 0.93 |
| 494 | -24.82 | 1.13 | 1.23 | 1.93 | 1.03 | 0.93 |
| 495 | -24.85 | 1.14 | 1.24 | 1.80 | 1.03 | 0.93 |
| 496 | -24.87 | 1.15 | 1.25 | 1.68 | 1.04 | 0.93 |
| 497 | -24.87 | 1.15 | 1.25 | 1.58 | 1.04 | 0.93 |
| 498 | -24.86 | 1.16 | 1.26 | 1.50 | 1.05 | 0.93 |
| 499 | -24.83 | 1.16 | 1.26 | 1.43 | 1.05 | 0.93 |
| 500 | -24.80 | 1.17 | 1.26 | 1.38 | 1.05 | 0.92 |

[Table 513]

| 501 | -24.75 | 1.17 | 1.27 | 1.35 | 1.06 | 0.92 |
|-----|--------|------|------|------|------|------|
| 502 | -24.69 | 1.17 | 1.27 | 1.33 | 1.06 | 0.92 |
| 503 | -24.62 | 1.18 | 1.27 | 1.32 | 1.06 | 0.92 |
| 504 | -24.55 | 1.18 | 1.27 | 1.31 | 1.06 | 0.92 |
| 505 | -24.46 | 1.18 | 1.27 | 1.31 | 1.07 | 0.93 |
| 506 | -24.38 | 1.18 | 1.27 | 1.32 | 1.07 | 0.93 |
| 507 | -24.29 | 1.18 | 1.27 | 1.32 | 1.07 | 0.93 |
| 508 | -24.20 | 1.18 | 1.26 | 1.32 | 1.07 | 0.93 |
| 509 | -24.11 | 1.18 | 1.26 | 1.32 | 1.07 | 0.93 |
| 510 | -24.03 | 1.17 | 1.25 | 1.30 | 1.07 | 0.93 |
| 511 | -23.95 | 1.17 | 1.25 | 1.28 | 1.07 | 0.93 |
| 512 | -24.03 | 1.04 | 1.12 | 4.23 | 0.97 | 0.96 |
| 513 | – | – | – | – | – | – |
| 514 | – | – | – | – | – | – |
| 515 | -24.09 | 1.04 | 1.13 | 4.05 | 0.98 | 0.96 |
| 516 | -24.15 | 1.05 | 1.14 | 3.88 | 0.98 | 0.95 |
| 517 | -24.20 | 1.06 | 1.14 | 3.72 | 0.99 | 0.95 |
| 518 | -24.24 | 1.07 | 1.15 | 3.56 | 0.99 | 0.95 |
| 519 | -24.27 | 1.07 | 1.16 | 3.42 | 0.99 | 0.95 |
| 520 | -24.30 | 1.08 | 1.16 | 3.29 | 1.00 | 0.94 |
| 521 | -24.31 | 1.09 | 1.17 | 3.18 | 1.00 | 0.94 |
| 522 | -24.32 | 1.09 | 1.18 | 3.07 | 1.00 | 0.94 |
| 523 | -24.31 | 1.10 | 1.18 | 2.99 | 1.01 | 0.94 |
| 524 | -24.29 | 1.10 | 1.19 | 2.92 | 1.01 | 0.94 |
| 525 | -24.26 | 1.11 | 1.19 | 2.86 | 1.01 | 0.94 |
| 526 | -24.22 | 1.11 | 1.20 | 2.81 | 1.02 | 0.94 |
| 527 | -24.17 | 1.12 | 1.20 | 2.78 | 1.02 | 0.94 |
| 528 | -24.11 | 1.12 | 1.20 | 2.76 | 1.02 | 0.94 |
| 529 | -24.05 | 1.12 | 1.20 | 2.75 | 1.03 | 0.93 |
| 530 | -23.97 | 1.12 | 1.20 | 2.75 | 1.03 | 0.93 |
| 531 | -23.89 | 1.13 | 1.20 | 2.75 | 1.03 | 0.93 |
| 532 | -23.81 | 1.13 | 1.20 | 2.76 | 1.03 | 0.94 |
| 533 | -23.73 | 1.13 | 1.20 | 2.76 | 1.03 | 0.94 |
| 534 | -23.64 | 1.13 | 1.20 | 2.77 | 1.04 | 0.94 |
| 535 | -23.56 | 1.13 | 1.20 | 2.77 | 1.04 | 0.94 |
| 536 | -23.48 | 1.13 | 1.19 | 2.75 | 1.04 | 0.94 |
| 537 | -23.40 | 1.12 | 1.19 | 2.73 | 1.04 | 0.94 |
| 538 | -23.33 | 1.12 | 1.18 | 2.70 | 1.04 | 0.94 |
| 539 | -23.82 | 0.99 | 1.06 | 5.11 | 0.94 | 0.97 |
| 540 | – | – | – | – | – | – |
| 541 | – | – | – | – | – | – |
| 542 | -23.84 | 1.00 | 1.07 | 4.98 | 0.95 | 0.97 |
| 543 | -23.86 | 1.01 | 1.08 | 4.86 | 0.95 | 0.97 |
| 544 | -23.87 | 1.01 | 1.09 | 4.75 | 0.96 | 0.96 |
| 545 | -23.88 | 1.02 | 1.09 | 4.64 | 0.96 | 0.96 |
| 546 | -23.88 | 1.03 | 1.10 | 4.55 | 0.96 | 0.96 |
| 547 | -23.87 | 1.03 | 1.10 | 4.46 | 0.97 | 0.96 |
| 548 | -23.85 | 1.04 | 1.11 | 4.39 | 0.97 | 0.96 |
| 549 | -23.83 | 1.04 | 1.12 | 4.33 | 0.97 | 0.95 |
| 550 | -23.80 | 1.05 | 1.12 | 4.28 | 0.98 | 0.95 |

[Table 514]

| 551 | -23.75 | 1.05 | 1.12 | 4.24 | 0.98 | 0.95 |
|-----|--------|------|------|------|------|------|
| 552 | -23.70 | 1.06 | 1.13 | 4.21 | 0.98 | 0.95 |
| 553 | -23.64 | 1.06 | 1.13 | 4.19 | 0.99 | 0.95 |
| 554 | -23.58 | 1.07 | 1.13 | 4.18 | 0.99 | 0.95 |
| 555 | -23.51 | 1.07 | 1.14 | 4.18 | 0.99 | 0.95 |
| 556 | -23.43 | 1.07 | 1.14 | 4.19 | 0.99 | 0.95 |
| 557 | -23.35 | 1.07 | 1.14 | 4.20 | 1.00 | 0.95 |
| 558 | -23.27 | 1.08 | 1.14 | 4.21 | 1.00 | 0.95 |
| 559 | -23.18 | 1.08 | 1.14 | 4.22 | 1.00 | 0.95 |
| 560 | -23.10 | 1.08 | 1.14 | 4.23 | 1.00 | 0.95 |
| 561 | -23.01 | 1.08 | 1.14 | 4.24 | 1.00 | 0.95 |
| 562 | -22.93 | 1.08 | 1.13 | 4.23 | 1.00 | 0.95 |
| 563 | -22.86 | 1.07 | 1.13 | 4.22 | 1.00 | 0.95 |
| 564 | -22.78 | 1.07 | 1.12 | 4.19 | 1.00 | 0.95 |
| 565 | -22.72 | 1.07 | 1.12 | 4.15 | 1.00 | 0.95 |
| 566 | -23.65 | 0.95 | 1.01 | 5.91 | 0.92 | 0.99 |
| 567 | – | – | – | – | – | – |
| 568 | – | – | – | – | – | – |
| 569 | -23.64 | 0.95 | 1.02 | 5.84 | 0.92 | 0.98 |
| 570 | -23.62 | 0.96 | 1.03 | 5.78 | 0.92 | 0.98 |
| 571 | -23.60 | 0.97 | 1.03 | 5.72 | 0.93 | 0.98 |
| 572 | -23.57 | 0.97 | 1.04 | 5.67 | 0.93 | 0.98 |
| 573 | -23.54 | 0.98 | 1.04 | 5.62 | 0.93 | 0.97 |
| 574 | -23.50 | 0.99 | 1.05 | 5.58 | 0.94 | 0.97 |
| 575 | -23.45 | 0.99 | 1.05 | 5.55 | 0.94 | 0.97 |
| 576 | -23.40 | 1.00 | 1.06 | 5.53 | 0.94 | 0.97 |
| 577 | -23.34 | 1.00 | 1.06 | 5.52 | 0.95 | 0.96 |
| 578 | -23.27 | 1.01 | 1.06 | 5.52 | 0.95 | 0.96 |
| 579 | -23.20 | 1.01 | 1.07 | 5.52 | 0.95 | 0.96 |
| 580 | -23.12 | 1.01 | 1.07 | 5.53 | 0.95 | 0.96 |
| 581 | -23.04 | 1.02 | 1.07 | 5.55 | 0.96 | 0.96 |
| 582 | -22.95 | 1.02 | 1.07 | 5.57 | 0.96 | 0.96 |
| 583 | -22.87 | 1.02 | 1.08 | 5.60 | 0.96 | 0.96 |
| 584 | -22.78 | 1.02 | 1.08 | 5.62 | 0.96 | 0.96 |
| 585 | -22.69 | 1.03 | 1.08 | 5.65 | 0.97 | 0.96 |
| 586 | -22.60 | 1.03 | 1.08 | 5.67 | 0.97 | 0.96 |
| 587 | -22.51 | 1.03 | 1.07 | 5.69 | 0.97 | 0.96 |
| 588 | -22.42 | 1.03 | 1.07 | 5.70 | 0.97 | 0.96 |
| 589 | -22.34 | 1.03 | 1.07 | 5.70 | 0.97 | 0.96 |
| 590 | -22.27 | 1.02 | 1.06 | 5.69 | 0.97 | 0.96 |
| 591 | -22.20 | 1.02 | 1.06 | 5.66 | 0.97 | 0.96 |
| 592 | -22.14 | 1.02 | 1.05 | 5.61 | 0.97 | 0.96 |
| 593 | -23.55 | 0.90 | 0.96 | 6.64 | 0.89 | 1.00 |
| 594 | – | – | – | – | – | – |
| 595 | – | – | – | – | – | – |
| 596 | -23.50 | 0.91 | 0.97 | 6.62 | 0.89 | 1.00 |
| 597 | -23.45 | 0.92 | 0.97 | 6.61 | 0.89 | 0.99 |
| 598 | -23.39 | 0.92 | 0.98 | 6.61 | 0.90 | 0.99 |
| 599 | -23.33 | 0.93 | 0.98 | 6.61 | 0.90 | 0.99 |
| 600 | -23.26 | 0.93 | 0.99 | 6.61 | 0.90 | 0.99 |

[Table 515]

| 601 | -23.19 | 0.94 | 0.99 | 6.62 | 0.91 | 0.98 |
|---|---|---|---|---|---|---|
| 602 | -23.12 | 0.94 | 1.00 | 6.64 | 0.91 | 0.98 |
| 603 | -23.04 | 0.95 | 1.00 | 6.66 | 0.91 | 0.98 |
| 604 | -22.95 | 0.95 | 1.00 | 6.69 | 0.92 | 0.98 |
| 605 | -22.86 | 0.96 | 1.01 | 6.73 | 0.92 | 0.98 |
| 606 | -22.77 | 0.96 | 1.01 | 6.77 | 0.92 | 0.97 |
| 607 | -22.67 | 0.97 | 1.01 | 6.81 | 0.92 | 0.97 |
| 608 | -22.58 | 0.97 | 1.01 | 6.86 | 0.93 | 0.97 |
| 609 | -22.47 | 0.97 | 1.01 | 6.91 | 0.93 | 0.97 |
| 610 | -22.37 | 0.97 | 1.01 | 6.95 | 0.93 | 0.97 |
| 611 | -22.27 | 0.97 | 1.02 | 7.00 | 0.93 | 0.97 |
| 612 | -22.17 | 0.98 | 1.01 | 7.04 | 0.93 | 0.97 |
| 613 | -22.08 | 0.98 | 1.01 | 7.08 | 0.93 | 0.97 |
| 614 | -21.99 | 0.98 | 1.01 | 7.11 | 0.93 | 0.97 |
| 615 | -21.90 | 0.98 | 1.01 | 7.13 | 0.94 | 0.97 |
| 616 | -21.82 | 0.97 | 1.01 | 7.13 | 0.94 | 0.97 |
| 617 | -21.74 | 0.97 | 1.00 | 7.12 | 0.94 | 0.97 |
| 618 | -21.68 | 0.97 | 1.00 | 7.09 | 0.93 | 0.98 |
| 619 | -21.63 | 0.97 | 0.99 | 7.03 | 0.93 | 0.98 |
| 620 | -23.50 | 0.86 | 0.91 | 7.25 | 0.86 | 1.01 |
| 621 | — | — | — | — | — | — |
| 622 | — | — | — | — | — | — |
| 623 | -23.42 | 0.87 | 0.92 | 7.30 | 0.86 | 1.01 |
| 624 | -23.34 | 0.87 | 0.92 | 7.34 | 0.86 | 1.01 |
| 625 | -23.25 | 0.88 | 0.93 | 7.39 | 0.87 | 1.00 |
| 626 | -23.16 | 0.88 | 0.93 | 7.45 | 0.87 | 1.00 |
| 627 | -23.06 | 0.89 | 0.93 | 7.51 | 0.87 | 1.00 |
| 628 | -22.97 | 0.89 | 0.94 | 7.57 | 0.88 | 1.00 |
| 629 | -22.86 | 0.90 | 0.94 | 7.63 | 0.88 | 1.00 |
| 630 | -22.76 | 0.90 | 0.94 | 7.70 | 0.88 | 0.99 |
| 631 | -22.65 | 0.91 | 0.95 | 7.77 | 0.88 | 0.99 |
| 632 | -22.54 | 0.91 | 0.95 | 7.84 | 0.89 | 0.99 |
| 633 | -22.43 | 0.91 | 0.95 | 7.92 | 0.89 | 0.99 |
| 634 | -22.31 | 0.92 | 0.95 | 8.00 | 0.89 | 0.99 |
| 635 | -22.20 | 0.92 | 0.96 | 8.08 | 0.89 | 0.99 |
| 636 | -22.08 | 0.92 | 0.96 | 8.15 | 0.90 | 0.99 |
| 637 | -21.97 | 0.92 | 0.96 | 8.23 | 0.90 | 0.98 |
| 638 | -21.86 | 0.93 | 0.96 | 8.30 | 0.90 | 0.98 |
| 639 | -21.75 | 0.93 | 0.96 | 8.36 | 0.90 | 0.98 |
| 640 | -21.65 | 0.93 | 0.96 | 8.41 | 0.90 | 0.99 |
| 641 | -21.55 | 0.93 | 0.95 | 8.45 | 0.90 | 0.99 |
| 642 | -21.46 | 0.93 | 0.95 | 8.48 | 0.90 | 0.99 |
| 643 | -21.38 | 0.92 | 0.95 | 8.49 | 0.90 | 0.99 |
| 644 | -21.31 | 0.92 | 0.94 | 8.48 | 0.90 | 0.99 |
| 645 | -21.25 | 0.92 | 0.94 | 8.45 | 0.90 | 0.99 |
| 646 | -21.20 | 0.92 | 0.93 | 8.39 | 0.90 | 0.99 |
| 647 | -23.54 | 0.82 | 0.86 | 7.75 | 0.83 | 1.03 |
| 648 | — | — | — | — | — | — |
| 649 | — | — | — | — | — | — |
| 650 | -23.42 | 0.83 | 0.87 | 7.85 | 0.83 | 1.02 |

[Table 516]

| 651 | -23.31 | 0.83 | 0.87 | 7.95 | 0.83 | 1.02 |
|---|---|---|---|---|---|---|
| 652 | -23.20 | 0.84 | 0.87 | 8.06 | 0.84 | 1.02 |
| 653 | -23.07 | 0.84 | 0.88 | 8.17 | 0.84 | 1.02 |
| 654 | -22.95 | 0.85 | 0.88 | 8.27 | 0.84 | 1.01 |
| 655 | -22.83 | 0.85 | 0.89 | 8.38 | 0.85 | 1.01 |
| 656 | -22.70 | 0.85 | 0.89 | 8.50 | 0.85 | 1.01 |
| 657 | -22.57 | 0.86 | 0.89 | 8.61 | 0.85 | 1.01 |
| 658 | -22.45 | 0.86 | 0.89 | 8.72 | 0.85 | 1.01 |
| 659 | -22.32 | 0.87 | 0.90 | 8.84 | 0.86 | 1.00 |
| 660 | -22.18 | 0.87 | 0.90 | 8.95 | 0.86 | 1.00 |
| 661 | -22.06 | 0.87 | 0.90 | 9.07 | 0.86 | 1.00 |
| 662 | -21.93 | 0.87 | 0.90 | 9.18 | 0.86 | 1.00 |
| 663 | -21.80 | 0.88 | 0.90 | 9.28 | 0.86 | 1.00 |
| 664 | -21.68 | 0.88 | 0.90 | 9.38 | 0.87 | 1.00 |
| 665 | -21.56 | 0.88 | 0.90 | 9.47 | 0.87 | 1.00 |
| 666 | -21.44 | 0.88 | 0.90 | 9.56 | 0.87 | 1.00 |
| 667 | -21.33 | 0.88 | 0.90 | 9.63 | 0.87 | 1.00 |
| 668 | -21.23 | 0.88 | 0.90 | 9.68 | 0.87 | 1.00 |
| 669 | -21.14 | 0.88 | 0.90 | 9.72 | 0.87 | 1.00 |
| 670 | -21.05 | 0.88 | 0.89 | 9.74 | 0.87 | 1.00 |
| 671 | -20.98 | 0.87 | 0.89 | 9.74 | 0.87 | 1.00 |
| 672 | -20.92 | 0.87 | 0.88 | 9.70 | 0.87 | 1.01 |
| 673 | -20.88 | 0.87 | 0.88 | 9.64 | 0.86 | 1.01 |
| 674 | -23.65 | 0.78 | 0.81 | 8.10 | 0.80 | 1.04 |
| 675 | — | — | — | — | — | — |
| 676 | — | — | — | — | — | — |
| 677 | -23.51 | 0.78 | 0.82 | 8.26 | 0.80 | 1.04 |
| 678 | -23.37 | 0.79 | 0.82 | 8.42 | 0.80 | 1.03 |
| 679 | -23.23 | 0.79 | 0.83 | 8.58 | 0.81 | 1.03 |
| 680 | -23.08 | 0.80 | 0.83 | 8.74 | 0.81 | 1.03 |
| 681 | -22.94 | 0.80 | 0.83 | 8.90 | 0.81 | 1.03 |
| 682 | -22.79 | 0.81 | 0.84 | 9.06 | 0.81 | 1.03 |
| 683 | -22.64 | 0.81 | 0.84 | 9.22 | 0.82 | 1.02 |
| 684 | -22.50 | 0.81 | 0.84 | 9.37 | 0.82 | 1.02 |
| 685 | -22.35 | 0.82 | 0.84 | 9.53 | 0.82 | 1.02 |
| 686 | -22.20 | 0.82 | 0.84 | 9.69 | 0.82 | 1.02 |
| 687 | -22.06 | 0.82 | 0.85 | 9.84 | 0.83 | 1.02 |
| 688 | -21.91 | 0.83 | 0.85 | 9.98 | 0.83 | 1.02 |
| 689 | -21.77 | 0.83 | 0.85 | 10.13 | 0.83 | 1.02 |
| 690 | -21.63 | 0.83 | 0.85 | 10.26 | 0.83 | 1.02 |
| 691 | -21.50 | 0.83 | 0.85 | 10.39 | 0.83 | 1.02 |
| 692 | -21.37 | 0.83 | 0.85 | 10.50 | 0.84 | 1.02 |
| 693 | -21.25 | 0.83 | 0.85 | 10.61 | 0.84 | 1.02 |
| 694 | -21.13 | 0.83 | 0.85 | 10.70 | 0.84 | 1.02 |
| 695 | -21.03 | 0.83 | 0.84 | 10.77 | 0.84 | 1.02 |
| 696 | -20.93 | 0.83 | 0.84 | 10.82 | 0.84 | 1.02 |
| 697 | -20.85 | 0.83 | 0.84 | 10.84 | 0.84 | 1.02 |
| 698 | -20.78 | 0.83 | 0.83 | 10.84 | 0.84 | 1.02 |
| 699 | -20.72 | 0.82 | 0.83 | 10.81 | 0.83 | 1.02 |
| 700 | -20.68 | 0.82 | 0.82 | 10.75 | 0.83 | 1.02 |

[Table 517]

| | | | | | |
|---|---|---|---|---|---|
| 701 | -23.87 | 0.74 | 0.77 | 8.29 | 0.76 | 1.05 |
| 702 | — | — | — | — | — | — |
| 703 | — | — | — | — | — | — |
| 704 | — | — | — | — | — | — |
| 705 | -23.53 | 0.75 | 0.77 | 8.72 | 0.77 | 1.05 |
| 706 | -23.37 | 0.75 | 0.78 | 8.93 | 0.77 | 1.05 |
| 707 | -23.20 | 0.76 | 0.78 | 9.14 | 0.78 | 1.04 |
| 708 | -23.03 | 0.76 | 0.78 | 9.35 | 0.78 | 1.04 |
| 709 | -22.87 | 0.76 | 0.79 | 9.56 | 0.78 | 1.04 |
| 710 | -22.70 | 0.77 | 0.79 | 9.76 | 0.79 | 1.04 |
| 711 | -22.53 | 0.77 | 0.79 | 9.96 | 0.79 | 1.04 |
| 712 | -22.37 | 0.77 | 0.79 | 10.16 | 0.79 | 1.04 |
| 713 | -22.21 | 0.78 | 0.80 | 10.36 | 0.79 | 1.04 |
| 714 | -22.04 | 0.78 | 0.80 | 10.55 | 0.80 | 1.03 |
| 715 | -21.89 | 0.78 | 0.80 | 10.73 | 0.80 | 1.03 |
| 716 | -21.74 | 0.78 | 0.80 | 10.91 | 0.80 | 1.03 |
| 717 | -21.59 | 0.78 | 0.80 | 11.07 | 0.80 | 1.03 |
| 718 | -21.45 | 0.79 | 0.80 | 11.22 | 0.80 | 1.03 |
| 719 | -21.31 | 0.79 | 0.80 | 11.36 | 0.80 | 1.03 |
| 720 | -21.19 | 0.79 | 0.80 | 11.49 | 0.81 | 1.04 |
| 721 | -21.07 | 0.79 | 0.80 | 11.60 | 0.81 | 1.04 |
| 722 | -20.96 | 0.79 | 0.79 | 11.68 | 0.81 | 1.04 |
| 723 | -20.86 | 0.78 | 0.79 | 11.74 | 0.81 | 1.04 |
| 724 | -20.77 | 0.78 | 0.79 | 11.78 | 0.81 | 1.04 |
| 725 | -20.70 | 0.78 | 0.78 | 11.78 | 0.80 | 1.04 |
| 726 | -20.65 | 0.78 | 0.78 | 11.75 | 0.80 | 1.04 |
| 727 | -20.61 | 0.77 | 0.77 | 11.69 | 0.80 | 1.04 |
| 728 | -24.20 | 0.70 | 0.72 | 8.29 | 0.73 | 1.06 |
| 729 | — | — | — | — | — | — |
| 730 | — | — | — | — | — | — |
| 731 | -24.01 | 0.70 | 0.72 | 8.56 | 0.73 | 1.06 |
| 732 | -23.81 | 0.71 | 0.73 | 8.83 | 0.74 | 1.06 |
| 733 | -23.62 | 0.71 | 0.73 | 9.09 | 0.74 | 1.06 |
| 734 | -23.43 | 0.71 | 0.73 | 9.35 | 0.74 | 1.06 |
| 735 | -23.25 | 0.72 | 0.74 | 9.61 | 0.75 | 1.05 |
| 736 | -23.06 | 0.72 | 0.74 | 9.87 | 0.75 | 1.05 |
| 737 | -22.87 | 0.72 | 0.74 | 10.11 | 0.75 | 1.05 |
| 738 | -22.69 | 0.73 | 0.74 | 10.36 | 0.76 | 1.05 |
| 739 | -22.51 | 0.73 | 0.75 | 10.60 | 0.76 | 1.05 |
| 740 | -22.34 | 0.73 | 0.75 | 10.83 | 0.76 | 1.05 |
| 741 | -22.17 | 0.74 | 0.75 | 11.06 | 0.76 | 1.05 |
| 742 | -22.00 | 0.74 | 0.75 | 11.28 | 0.77 | 1.05 |
| 743 | -21.83 | 0.74 | 0.75 | 11.49 | 0.77 | 1.05 |
| 744 | -21.68 | 0.74 | 0.75 | 11.68 | 0.77 | 1.05 |
| 745 | -21.53 | 0.74 | 0.75 | 11.86 | 0.77 | 1.05 |
| 746 | -21.39 | 0.74 | 0.75 | 12.02 | 0.77 | 1.05 |
| 747 | -21.25 | 0.74 | 0.75 | 12.17 | 0.77 | 1.05 |
| 748 | -21.13 | 0.74 | 0.75 | 12.29 | 0.77 | 1.05 |
| 749 | -21.02 | 0.74 | 0.75 | 12.39 | 0.77 | 1.06 |
| 750 | -20.92 | 0.74 | 0.74 | 12.47 | 0.77 | 1.06 |

[Table 518]

| | | | | | | |
|---|---|---|---|---|---|---|
| 751 | -20.84 | 0.74 | 0.74 | 12.51 | 0.77 | 1.06 |
| 752 | -20.77 | 0.74 | 0.74 | 12.52 | 0.77 | 1.06 |
| 753 | -20.72 | 0.73 | 0.73 | 12.49 | 0.77 | 1.06 |
| 754 | -20.69 | 0.73 | 0.73 | 12.42 | 0.77 | 1.06 |
| 755 | -24.66 | 0.66 | 0.67 | 8.09 | 0.69 | 1.07 |
| 756 | — | — | — | — | — | — |
| 757 | — | — | — | — | — | — |
| 758 | -24.44 | 0.66 | 0.68 | 8.41 | 0.70 | 1.07 |
| 759 | -24.22 | 0.67 | 0.68 | 8.73 | 0.70 | 1.07 |
| 760 | -24.01 | 0.67 | 0.68 | 9.04 | 0.71 | 1.07 |
| 761 | -23.80 | 0.67 | 0.69 | 9.35 | 0.71 | 1.07 |
| 762 | -23.59 | 0.68 | 0.69 | 9.66 | 0.71 | 1.07 |
| 763 | -23.39 | 0.68 | 0.69 | 9.95 | 0.72 | 1.07 |
| 764 | -23.19 | 0.68 | 0.70 | 10.25 | 0.72 | 1.07 |
| 765 | -22.99 | 0.69 | 0.70 | 10.53 | 0.72 | 1.07 |
| 766 | -22.79 | 0.69 | 0.70 | 10.82 | 0.73 | 1.07 |
| 767 | -22.60 | 0.69 | 0.70 | 11.09 | 0.73 | 1.07 |
| 768 | -22.42 | 0.69 | 0.70 | 11.35 | 0.73 | 1.07 |
| 769 | -22.24 | 0.70 | 0.70 | 11.60 | 0.73 | 1.07 |
| 770 | -22.07 | 0.70 | 0.70 | 11.84 | 0.74 | 1.07 |
| 771 | -21.90 | 0.70 | 0.70 | 12.06 | 0.74 | 1.07 |
| 772 | -21.75 | 0.70 | 0.70 | 12.27 | 0.74 | 1.07 |
| 773 | -21.60 | 0.70 | 0.70 | 12.46 | 0.74 | 1.07 |
| 774 | -21.46 | 0.70 | 0.70 | 12.62 | 0.74 | 1.07 |
| 775 | -21.33 | 0.70 | 0.70 | 12.76 | 0.74 | 1.07 |
| 776 | -21.22 | 0.70 | 0.70 | 12.88 | 0.74 | 1.08 |
| 777 | -21.12 | 0.70 | 0.70 | 12.96 | 0.74 | 1.08 |
| 778 | -21.04 | 0.69 | 0.69 | 13.01 | 0.74 | 1.08 |
| 779 | -20.97 | 0.69 | 0.69 | 13.02 | 0.74 | 1.08 |
| 780 | -20.93 | 0.69 | 0.68 | 12.99 | 0.74 | 1.08 |
| 781 | -20.91 | 0.69 | 0.68 | 12.92 | 0.73 | 1.08 |
| 782 | -25.27 | 0.62 | 0.63 | 7.67 | 0.66 | 1.07 |
| 783 | — | — | — | — | — | — |
| 784 | — | — | — | — | — | — |
| 785 | -25.03 | 0.62 | 0.63 | 8.03 | 0.66 | 1.07 |
| 786 | -24.79 | 0.63 | 0.64 | 8.40 | 0.67 | 1.08 |
| 787 | -24.55 | 0.63 | 0.64 | 8.76 | 0.67 | 1.08 |
| 788 | -24.32 | 0.63 | 0.64 | 9.11 | 0.67 | 1.08 |
| 789 | -24.09 | 0.64 | 0.65 | 9.46 | 0.68 | 1.08 |
| 790 | -23.87 | 0.64 | 0.65 | 9.80 | 0.68 | 1.08 |
| 791 | -23.65 | 0.64 | 0.65 | 10.14 | 0.69 | 1.08 |
| 792 | -23.43 | 0.65 | 0.65 | 10.46 | 0.69 | 1.08 |
| 793 | -23.22 | 0.65 | 0.65 | 10.78 | 0.69 | 1.08 |
| 794 | -23.02 | 0.65 | 0.66 | 11.09 | 0.69 | 1.08 |
| 795 | -22.82 | 0.65 | 0.66 | 11.39 | 0.70 | 1.08 |
| 796 | -22.63 | 0.65 | 0.66 | 11.67 | 0.70 | 1.08 |
| 797 | -22.45 | 0.65 | 0.66 | 11.94 | 0.70 | 1.08 |
| 798 | -22.28 | 0.66 | 0.66 | 12.19 | 0.71 | 1.09 |
| 799 | -22.11 | 0.66 | 0.66 | 12.42 | 0.71 | 1.09 |
| 800 | -21.96 | 0.66 | 0.66 | 12.63 | 0.71 | 1.09 |

[Table 519]

| | | | | | | |
|---|---|---|---|---|---|---|
| 801 | -21.81 | 0.66 | 0.66 | 12.82 | 0.71 | 1.09 |
| 802 | -21.68 | 0.66 | 0.66 | 12.97 | 0.71 | 1.09 |
| 803 | -21.57 | 0.66 | 0.65 | 13.10 | 0.71 | 1.09 |
| 804 | -21.47 | 0.65 | 0.65 | 13.19 | 0.71 | 1.10 |
| 805 | -21.38 | 0.65 | 0.65 | 13.24 | 0.71 | 1.10 |
| 806 | -21.32 | 0.65 | 0.65 | 13.26 | 0.71 | 1.10 |
| 807 | -21.29 | 0.65 | 0.64 | 13.22 | 0.71 | 1.10 |
| 808 | -21.27 | 0.64 | 0.63 | 13.14 | 0.70 | 1.10 |
| 809 | -26.06 | 0.58 | 0.58 | 7.01 | 0.61 | 1.08 |
| 810 | – | – | – | – | – | – |
| 811 | – | – | – | – | – | – |
| 812 | -25.79 | 0.58 | 0.59 | 7.42 | 0.62 | 1.08 |
| 813 | -25.53 | 0.59 | 0.59 | 7.82 | 0.63 | 1.08 |
| 814 | -25.27 | 0.59 | 0.59 | 8.22 | 0.63 | 1.08 |
| 815 | -25.01 | 0.59 | 0.60 | 8.62 | 0.64 | 1.08 |
| 816 | -24.76 | 0.60 | 0.60 | 9.01 | 0.64 | 1.09 |
| 817 | -24.52 | 0.60 | 0.60 | 9.39 | 0.64 | 1.09 |
| 818 | -24.28 | 0.60 | 0.61 | 9.76 | 0.65 | 1.09 |
| 819 | -24.05 | 0.60 | 0.61 | 10.12 | 0.65 | 1.09 |
| 820 | -23.82 | 0.61 | 0.61 | 10.48 | 0.66 | 1.09 |
| 821 | -23.60 | 0.61 | 0.61 | 10.82 | 0.66 | 1.09 |
| 822 | -23.39 | 0.61 | 0.61 | 11.15 | 0.66 | 1.10 |
| 823 | -23.19 | 0.61 | 0.61 | 11.46 | 0.67 | 1.10 |
| 824 | -22.99 | 0.61 | 0.61 | 11.76 | 0.67 | 1.10 |
| 825 | -22.81 | 0.62 | 0.62 | 12.03 | 0.67 | 1.10 |
| 826 | -22.64 | 0.62 | 0.62 | 12.29 | 0.67 | 1.10 |
| 827 | -22.47 | 0.62 | 0.62 | 12.51 | 0.68 | 1.11 |
| 828 | -22.33 | 0.62 | 0.61 | 12.72 | 0.68 | 1.11 |
| 829 | -22.19 | 0.62 | 0.61 | 12.89 | 0.68 | 1.11 |
| 830 | -22.07 | 0.61 | 0.61 | 13.02 | 0.68 | 1.11 |
| 831 | -21.97 | 0.61 | 0.61 | 13.12 | 0.68 | 1.12 |
| 832 | -21.89 | 0.61 | 0.61 | 13.18 | 0.68 | 1.12 |
| 833 | -21.83 | 0.61 | 0.60 | 13.19 | 0.68 | 1.12 |
| 834 | -21.80 | 0.61 | 0.60 | 13.15 | 0.67 | 1.12 |
| 835 | -21.80 | 0.60 | 0.59 | 13.05 | 0.67 | 1.12 |
| 836 | -27.06 | 0.54 | 0.53 | 6.12 | 0.57 | 1.07 |
| 837 | – | – | – | – | – | – |
| 838 | – | – | – | – | – | – |
| 839 | -26.76 | 0.54 | 0.54 | 6.56 | 0.58 | 1.08 |
| 840 | -26.47 | 0.54 | 0.54 | 7.00 | 0.58 | 1.08 |
| 841 | -26.18 | 0.55 | 0.55 | 7.43 | 0.59 | 1.08 |
| 842 | -25.90 | 0.55 | 0.55 | 7.86 | 0.59 | 1.09 |
| 843 | -25.63 | 0.55 | 0.55 | 8.28 | 0.60 | 1.09 |
| 844 | -25.36 | 0.56 | 0.56 | 8.69 | 0.60 | 1.09 |
| 845 | -25.10 | 0.56 | 0.56 | 9.10 | 0.61 | 1.09 |
| 846 | -24.85 | 0.56 | 0.56 | 9.49 | 0.61 | 1.10 |
| 847 | -24.61 | 0.57 | 0.56 | 9.88 | 0.62 | 1.10 |
| 848 | -24.37 | 0.57 | 0.57 | 10.24 | 0.62 | 1.10 |
| 849 | -24.14 | 0.57 | 0.57 | 10.60 | 0.63 | 1.11 |
| 850 | -23.93 | 0.57 | 0.57 | 10.94 | 0.63 | 1.11 |

[Table 520]

| | | | | | | |
|------|--------|------|------|-------|------|------|
| 851 | -23.72 | 0.57 | 0.57 | 11.26 | 0.63 | 1.11 |
| 852 | -23.52 | 0.57 | 0.57 | 11.55 | 0.64 | 1.12 |
| 853 | -23.34 | 0.58 | 0.57 | 11.83 | 0.64 | 1.12 |
| 854 | -23.17 | 0.58 | 0.57 | 12.07 | 0.64 | 1.12 |
| 855 | -23.01 | 0.58 | 0.57 | 12.29 | 0.64 | 1.13 |
| 856 | -22.87 | 0.58 | 0.57 | 12.47 | 0.64 | 1.13 |
| 857 | -22.75 | 0.57 | 0.57 | 12.61 | 0.64 | 1.13 |
| 858 | -22.65 | 0.57 | 0.57 | 12.71 | 0.64 | 1.13 |
| 859 | -22.57 | 0.57 | 0.56 | 12.76 | 0.64 | 1.14 |
| 860 | -22.51 | 0.57 | 0.56 | 12.77 | 0.64 | 1.14 |
| 861 | -22.49 | 0.56 | 0.56 | 12.72 | 0.64 | 1.14 |
| 862 | -22.49 | 0.56 | 0.55 | 12.60 | 0.63 | 1.14 |
| 863 | -28.30 | 0.50 | 0.49 | 5.02 | 0.52 | 1.06 |
| 864 | – | – | – | – | – | – |
| 865 | – | – | – | – | – | – |
| 866 | -27.97 | 0.50 | 0.49 | 5.47 | 0.53 | 1.06 |
| 867 | -27.65 | 0.50 | 0.50 | 5.93 | 0.53 | 1.07 |
| 868 | -27.34 | 0.51 | 0.50 | 6.38 | 0.54 | 1.08 |
| 869 | -27.03 | 0.51 | 0.50 | 6.82 | 0.55 | 1.08 |
| 870 | -26.73 | 0.51 | 0.51 | 7.27 | 0.55 | 1.09 |
| 871 | -26.44 | 0.52 | 0.51 | 7.70 | 0.56 | 1.09 |
| 872 | -26.16 | 0.52 | 0.51 | 8.13 | 0.57 | 1.10 |
| 873 | -25.88 | 0.52 | 0.52 | 8.55 | 0.57 | 1.10 |
| 874 | -25.62 | 0.53 | 0.52 | 8.95 | 0.58 | 1.10 |
| 875 | -25.36 | 0.53 | 0.52 | 9.34 | 0.58 | 1.11 |
| 876 | -25.12 | 0.53 | 0.52 | 9.72 | 0.58 | 1.11 |
| 877 | -24.88 | 0.53 | 0.53 | 10.07 | 0.59 | 1.12 |
| 878 | -24.66 | 0.53 | 0.53 | 10.41 | 0.59 | 1.12 |
| 879 | -24.45 | 0.53 | 0.53 | 10.72 | 0.60 | 1.13 |
| 880 | -24.25 | 0.53 | 0.53 | 11.01 | 0.60 | 1.13 |
| 881 | -24.07 | 0.54 | 0.53 | 11.26 | 0.60 | 1.13 |
| 882 | -23.90 | 0.54 | 0.53 | 11.49 | 0.60 | 1.14 |
| 883 | -23.76 | 0.53 | 0.53 | 11.67 | 0.61 | 1.14 |
| 884 | -23.63 | 0.53 | 0.53 | 11.81 | 0.61 | 1.15 |
| 885 | -23.53 | 0.53 | 0.52 | 11.91 | 0.61 | 1.15 |
| 886 | -23.45 | 0.53 | 0.52 | 11.96 | 0.61 | 1.15 |
| 887 | -23.40 | 0.53 | 0.52 | 11.95 | 0.60 | 1.15 |
| 888 | -23.38 | 0.53 | 0.51 | 11.88 | 0.60 | 1.16 |
| 889 | -23.40 | 0.52 | 0.51 | 11.75 | 0.60 | 1.16 |
| 890 | -84.89 | 0.00 | 0.00 | -0.09 | 0.00 | 0.00 |
| 891 | -84.89 | 0.00 | 0.00 | -0.09 | 0.00 | 0.00 |
| 892 | -28.54 | 0.48 | 0.47 | 4.98 | 0.51 | 1.06 |
| 893 | -28.50 | 0.48 | 0.47 | 5.18 | 0.50 | 1.06 |
| 894 | -24.22 | 1.14 | 1.24 | 2.34 | 1.04 | 0.93 |
| 895 | – | – | – | – | – | – |
| 896 | – | – | – | – | – | – |
| 897 | -24.36 | 1.15 | 1.25 | 2.06 | 1.04 | 0.93 |
| 898 | -24.50 | 1.16 | 1.26 | 1.79 | 1.05 | 0.93 |
| 899 | -24.63 | 1.16 | 1.27 | 1.53 | 1.05 | 0.93 |
| 900 | -24.74 | 1.17 | 1.28 | 1.29 | 1.06 | 0.92 |

[Table 521]

| | | | | | | |
|-----|--------|------|------|-------|------|------|
| 901 | -24.84 | 1.18 | 1.29 | 1.06 | 1.06 | 0.92 |
| 902 | -24.93 | 1.19 | 1.30 | 0.86 | 1.07 | 0.92 |
| 903 | -25.00 | 1.19 | 1.31 | 0.68 | 1.07 | 0.92 |
| 904 | -25.05 | 1.20 | 1.31 | 0.51 | 1.07 | 0.92 |
| 905 | -25.09 | 1.21 | 1.32 | 0.37 | 1.08 | 0.92 |
| 906 | -25.10 | 1.21 | 1.33 | 0.26 | 1.08 | 0.92 |
| 907 | -25.10 | 1.22 | 1.33 | 0.16 | 1.09 | 0.92 |
| 908 | -25.08 | 1.22 | 1.34 | 0.08 | 1.09 | 0.92 |
| 909 | -25.05 | 1.23 | 1.34 | 0.02 | 1.09 | 0.91 |
| 910 | -25.01 | 1.23 | 1.34 | -0.02 | 1.10 | 0.91 |
| 911 | -24.95 | 1.23 | 1.34 | -0.05 | 1.10 | 0.91 |
| 912 | -24.88 | 1.23 | 1.35 | -0.06 | 1.10 | 0.91 |
| 913 | -24.80 | 1.24 | 1.35 | -0.07 | 1.11 | 0.92 |
| 914 | -24.71 | 1.24 | 1.35 | -0.07 | 1.11 | 0.92 |
| 915 | -24.61 | 1.24 | 1.34 | -0.06 | 1.11 | 0.92 |
| 916 | -24.52 | 1.24 | 1.34 | -0.05 | 1.11 | 0.92 |
| 917 | -24.42 | 1.24 | 1.34 | -0.05 | 1.11 | 0.92 |
| 918 | -24.32 | 1.23 | 1.33 | -0.05 | 1.11 | 0.92 |
| 919 | -24.22 | 1.23 | 1.33 | -0.06 | 1.12 | 0.92 |
| 920 | -24.12 | 1.23 | 1.32 | -0.08 | 1.12 | 0.93 |
| 921 | -23.72 | 1.16 | 1.26 | 2.30 | 1.05 | 0.93 |
| 922 | — | — | — | — | — | — |
| 923 | — | — | — | — | — | — |
| 924 | -23.87 | 1.16 | 1.27 | 2.01 | 1.06 | 0.93 |
| 925 | -24.00 | 1.17 | 1.28 | 1.74 | 1.06 | 0.93 |
| 926 | -24.13 | 1.18 | 1.29 | 1.48 | 1.07 | 0.92 |
| 927 | -24.24 | 1.19 | 1.30 | 1.24 | 1.07 | 0.92 |
| 928 | -24.34 | 1.19 | 1.31 | 1.02 | 1.08 | 0.92 |
| 929 | -24.42 | 1.20 | 1.32 | 0.82 | 1.08 | 0.92 |
| 930 | -24.48 | 1.21 | 1.32 | 0.64 | 1.08 | 0.92 |
| 931 | -24.53 | 1.21 | 1.33 | 0.48 | 1.09 | 0.92 |
| 932 | -24.56 | 1.22 | 1.34 | 0.35 | 1.09 | 0.92 |
| 933 | -24.56 | 1.22 | 1.34 | 0.24 | 1.10 | 0.92 |
| 934 | -24.57 | 1.23 | 1.35 | 0.15 | 1.10 | 0.92 |
| 935 | -24.53 | 1.23 | 1.35 | 0.07 | 1.10 | 0.92 |
| 936 | -24.49 | 1.24 | 1.35 | 0.02 | 1.11 | 0.91 |
| 937 | -24.43 | 1.24 | 1.35 | -0.02 | 1.11 | 0.91 |
| 938 | -24.36 | 1.24 | 1.36 | -0.04 | 1.11 | 0.92 |
| 939 | -24.28 | 1.24 | 1.36 | -0.05 | 1.12 | 0.92 |
| 940 | -24.20 | 1.25 | 1.36 | -0.06 | 1.12 | 0.92 |
| 941 | -24.10 | 1.25 | 1.35 | -0.05 | 1.12 | 0.92 |
| 942 | -24.00 | 1.25 | 1.35 | -0.05 | 1.12 | 0.92 |
| 943 | -23.90 | 1.25 | 1.35 | -0.04 | 1.12 | 0.92 |
| 944 | -23.79 | 1.24 | 1.35 | -0.04 | 1.13 | 0.92 |
| 945 | -23.68 | 1.24 | 1.34 | -0.04 | 1.13 | 0.92 |
| 946 | -23.58 | 1.24 | 1.33 | -0.05 | 1.13 | 0.93 |
| 947 | -23.48 | 1.23 | 1.33 | -0.08 | 1.13 | 0.93 |
| 948 | -22.97 | 1.18 | 1.29 | 2.13 | 1.07 | 0.93 |
| 949 | — | — | — | — | — | — |
| 950 | — | — | — | — | — | — |

[Table 522]

555

| | | | | | |
|---|---|---|---|---|---|
| 951 | -23.11 | 1.19 | 1.30 | 1.84 | 1.08 | 0.93 |
| 952 | -23.25 | 1.19 | 1.31 | 1.57 | 1.08 | 0.92 |
| 953 | -23.37 | 1.20 | 1.31 | 1.32 | 1.09 | 0.92 |
| 954 | -23.47 | 1.21 | 1.32 | 1.08 | 1.09 | 0.92 |
| 955 | -23.56 | 1.22 | 1.33 | 0.87 | 1.10 | 0.92 |
| 956 | -23.63 | 1.22 | 1.34 | 0.68 | 1.10 | 0.92 |
| 957 | -23.68 | 1.23 | 1.34 | 0.52 | 1.10 | 0.92 |
| 958 | -23.71 | 1.23 | 1.35 | 0.38 | 1.11 | 0.92 |
| 959 | -23.72 | 1.24 | 1.35 | 0.26 | 1.11 | 0.92 |
| 960 | -23.70 | 1.24 | 1.36 | 0.16 | 1.12 | 0.92 |
| 961 | -23.66 | 1.25 | 1.36 | 0.08 | 1.12 | 0.92 |
| 962 | -23.63 | 1.25 | 1.37 | 0.02 | 1.12 | 0.92 |
| 963 | -23.57 | 1.25 | 1.37 | -0.02 | 1.13 | 0.92 |
| 964 | -23.50 | 1.26 | 1.37 | -0.04 | 1.13 | 0.92 |
| 965 | -23.41 | 1.26 | 1.37 | -0.06 | 1.13 | 0.92 |
| 966 | -23.32 | 1.26 | 1.37 | -0.06 | 1.13 | 0.92 |
| 967 | -23.21 | 1.26 | 1.37 | -0.06 | 1.14 | 0.92 |
| 968 | -23.10 | 1.26 | 1.37 | -0.05 | 1.14 | 0.92 |
| 969 | -22.99 | 1.26 | 1.36 | -0.04 | 1.14 | 0.92 |
| 970 | -22.87 | 1.26 | 1.36 | -0.03 | 1.14 | 0.92 |
| 971 | -22.75 | 1.25 | 1.35 | -0.03 | 1.14 | 0.92 |
| 972 | -22.63 | 1.25 | 1.35 | -0.04 | 1.14 | 0.93 |
| 973 | -22.52 | 1.25 | 1.34 | -0.05 | 1.14 | 0.93 |
| 974 | -22.41 | 1.24 | 1.33 | -0.08 | 1.14 | 0.93 |
| 975 | -22.30 | 1.20 | 1.31 | 1.85 | 1.09 | 0.92 |
| 976 | – | – | – | – | – | – |
| 977 | – | – | – | – | – | – |
| 978 | -22.44 | 1.21 | 1.32 | 1.57 | 1.10 | 0.92 |
| 979 | -22.57 | 1.21 | 1.33 | 1.31 | 1.10 | 0.92 |
| 980 | -22.68 | 1.22 | 1.33 | 1.07 | 1.11 | 0.92 |
| 981 | -22.76 | 1.23 | 1.34 | 0.86 | 1.11 | 0.92 |
| 982 | -22.84 | 1.23 | 1.35 | 0.66 | 1.11 | 0.92 |
| 983 | -22.87 | 1.24 | 1.35 | 0.50 | 1.12 | 0.92 |
| 984 | -22.91 | 1.24 | 1.36 | 0.35 | 1.12 | 0.92 |
| 985 | -22.91 | 1.25 | 1.36 | 0.23 | 1.13 | 0.92 |
| 986 | -22.90 | 1.25 | 1.37 | 0.13 | 1.13 | 0.92 |
| 987 | -22.86 | 1.26 | 1.37 | 0.06 | 1.13 | 0.92 |
| 988 | -22.81 | 1.26 | 1.37 | 0.00 | 1.14 | 0.92 |
| 989 | -22.74 | 1.26 | 1.38 | -0.04 | 1.14 | 0.92 |
| 990 | -22.66 | 1.26 | 1.38 | -0.06 | 1.14 | 0.92 |
| 991 | -22.57 | 1.27 | 1.38 | -0.07 | 1.15 | 0.92 |
| 992 | -22.46 | 1.27 | 1.38 | -0.07 | 1.15 | 0.92 |
| 993 | -22.34 | 1.27 | 1.37 | -0.06 | 1.15 | 0.92 |
| 994 | -22.22 | 1.27 | 1.37 | -0.05 | 1.15 | 0.92 |
| 995 | -22.09 | 1.27 | 1.37 | -0.04 | 1.15 | 0.92 |
| 996 | -21.96 | 1.26 | 1.37 | -0.03 | 1.16 | 0.92 |
| 997 | -21.83 | 1.26 | 1.36 | -0.02 | 1.16 | 0.93 |
| 998 | -21.70 | 1.26 | 1.36 | -0.01 | 1.16 | 0.93 |
| 999 | -21.57 | 1.26 | 1.35 | -0.02 | 1.16 | 0.93 |
| 1000 | -21.44 | 1.25 | 1.34 | -0.04 | 1.16 | 0.93 |

[Table 523]

| | | | | | | |
|------|--------|------|------|-------|------|------|
| 1001 | -21.32 | 1.25 | 1.33 | -0.08 | 1.16 | 0.93 |
| 1002 | -21.56 | 1.21 | 1.32 | 1.79 | 1.10 | 0.92 |
| 1003 | – | – | – | – | – | – |
| 1004 | -21.70 | 1.22 | 1.33 | 1.51 | 1.11 | 0.92 |
| 1005 | -21.83 | 1.22 | 1.33 | 1.25 | 1.11 | 0.92 |
| 1006 | -21.93 | 1.23 | 1.34 | 1.01 | 1.12 | 0.92 |
| 1007 | -22.02 | 1.23 | 1.35 | 0.79 | 1.12 | 0.92 |
| 1008 | -22.09 | 1.24 | 1.36 | 0.60 | 1.13 | 0.92 |
| 1009 | -22.13 | 1.25 | 1.36 | 0.44 | 1.13 | 0.92 |
| 1010 | -22.14 | 1.25 | 1.37 | 0.30 | 1.13 | 0.92 |
| 1011 | -22.15 | 1.26 | 1.37 | 0.18 | 1.14 | 0.92 |
| 1012 | -22.12 | 1.26 | 1.37 | 0.09 | 1.14 | 0.92 |
| 1013 | -22.07 | 1.26 | 1.38 | 0.02 | 1.15 | 0.92 |
| 1014 | -22.01 | 1.27 | 1.38 | -0.03 | 1.15 | 0.92 |
| 1015 | -21.93 | 1.27 | 1.38 | -0.06 | 1.15 | 0.92 |
| 1016 | -21.84 | 1.27 | 1.38 | -0.08 | 1.15 | 0.92 |
| 1017 | -21.73 | 1.27 | 1.38 | -0.08 | 1.16 | 0.92 |
| 1018 | -21.61 | 1.27 | 1.38 | -0.08 | 1.16 | 0.92 |
| 1019 | -21.48 | 1.27 | 1.38 | -0.06 | 1.16 | 0.92 |
| 1020 | -21.34 | 1.27 | 1.38 | -0.04 | 1.16 | 0.92 |
| 1021 | -21.20 | 1.27 | 1.37 | -0.02 | 1.17 | 0.92 |
| 1022 | -21.06 | 1.27 | 1.37 | 0.00 | 1.17 | 0.93 |
| 1023 | -20.91 | 1.27 | 1.36 | 0.02 | 1.17 | 0.93 |
| 1024 | -20.76 | 1.26 | 1.36 | 0.03 | 1.17 | 0.93 |
| 1025 | -20.62 | 1.26 | 1.35 | 0.03 | 1.17 | 0.93 |
| 1026 | -20.47 | 1.26 | 1.35 | 0.02 | 1.17 | 0.93 |
| 1027 | -20.33 | 1.25 | 1.34 | -0.01 | 1.17 | 0.94 |
| 1028 | -20.20 | 1.24 | 1.33 | -0.05 | 1.17 | 0.94 |
| 1029 | -21.33 | 1.22 | 1.32 | 1.64 | 1.11 | 0.92 |
| 1030 | – | – | – | – | – | – |
| 1031 | -21.47 | 1.22 | 1.33 | 1.36 | 1.11 | 0.92 |
| 1032 | -21.59 | 1.23 | 1.34 | 1.11 | 1.12 | 0.92 |
| 1033 | -21.69 | 1.23 | 1.35 | 0.88 | 1.12 | 0.92 |
| 1034 | -21.77 | 1.24 | 1.35 | 0.68 | 1.13 | 0.92 |
| 1035 | -21.82 | 1.24 | 1.36 | 0.50 | 1.13 | 0.92 |
| 1036 | -21.85 | 1.25 | 1.37 | 0.35 | 1.14 | 0.92 |
| 1037 | -21.85 | 1.25 | 1.37 | 0.22 | 1.14 | 0.92 |
| 1038 | -21.84 | 1.26 | 1.37 | 0.12 | 1.14 | 0.92 |
| 1039 | -21.80 | 1.26 | 1.38 | 0.04 | 1.15 | 0.92 |
| 1040 | -21.74 | 1.27 | 1.38 | -0.02 | 1.15 | 0.92 |
| 1041 | -21.66 | 1.27 | 1.38 | -0.06 | 1.15 | 0.92 |
| 1042 | -21.57 | 1.27 | 1.38 | -0.08 | 1.16 | 0.92 |
| 1043 | -21.46 | 1.27 | 1.38 | -0.08 | 1.16 | 0.92 |
| 1044 | -21.35 | 1.27 | 1.38 | -0.08 | 1.16 | 0.92 |
| 1045 | -21.22 | 1.27 | 1.38 | -0.07 | 1.16 | 0.92 |
| 1046 | -21.08 | 1.27 | 1.38 | -0.04 | 1.17 | 0.92 |
| 1047 | -20.93 | 1.27 | 1.38 | -0.02 | 1.17 | 0.92 |
| 1048 | -20.78 | 1.27 | 1.37 | 0.01 | 1.17 | 0.93 |
| 1049 | -20.63 | 1.27 | 1.37 | 0.03 | 1.17 | 0.93 |
| 1050 | -20.48 | 1.27 | 1.36 | 0.05 | 1.17 | 0.93 |

[Table 524]

| 1051 | -20.32 | 1.26 | 1.36 | 0.06 | 1.17 | 0.93 |
|------|--------|------|------|------|------|------|
| 1052 | -20.17 | 1.26 | 1.35 | 0.06 | 1.17 | 0.93 |
| 1053 | -20.02 | 1.25 | 1.34 | 0.05 | 1.17 | 0.94 |
| 1054 | -19.88 | 1.25 | 1.33 | 0.02 | 1.17 | 0.94 |
| 1055 | -19.74 | 1.24 | 1.32 | -0.03 | 1.17 | 0.94 |
| 1056 | -13.20 | 1.22 | 1.30 | 0.61 | 1.18 | 0.95 |
| 1057 | – | – | – | – | – | – |
| 1058 | – | – | – | – | – | – |
| 1059 | -12.68 | 1.22 | 1.30 | 0.81 | 1.19 | 0.95 |
| 1060 | -23.65 | 1.16 | 1.28 | 2.96 | 1.06 | 0.94 |
| 1061 | – | – | – | – | – | – |
| 1062 | -23.79 | 1.17 | 1.29 | 2.67 | 1.07 | 0.93 |
| 1063 | -23.94 | 1.18 | 1.30 | 2.39 | 1.07 | 0.93 |
| 1064 | -24.07 | 1.19 | 1.31 | 2.12 | 1.08 | 0.93 |
| 1065 | -24.19 | 1.20 | 1.32 | 1.87 | 1.08 | 0.93 |
| 1066 | -24.30 | 1.21 | 1.33 | 1.64 | 1.09 | 0.93 |
| 1067 | -24.39 | 1.21 | 1.34 | 1.42 | 1.09 | 0.93 |
| 1068 | -24.47 | 1.22 | 1.34 | 1.23 | 1.10 | 0.92 |
| 1069 | -24.53 | 1.23 | 1.35 | 1.06 | 1.10 | 0.92 |
| 1070 | -24.57 | 1.23 | 1.36 | 0.91 | 1.11 | 0.92 |
| 1071 | -24.60 | 1.24 | 1.37 | 0.78 | 1.11 | 0.92 |
| 1072 | -24.60 | 1.25 | 1.37 | 0.67 | 1.12 | 0.92 |
| 1073 | -24.59 | 1.25 | 1.38 | 0.59 | 1.12 | 0.92 |
| 1074 | -24.56 | 1.26 | 1.38 | 0.52 | 1.12 | 0.92 |
| 1075 | -24.51 | 1.26 | 1.38 | 0.47 | 1.13 | 0.92 |
| 1076 | -24.47 | 1.26 | 1.39 | 0.44 | 1.13 | 0.92 |
| 1077 | -24.40 | 1.27 | 1.39 | 0.42 | 1.13 | 0.92 |
| 1078 | -24.32 | 1.27 | 1.39 | 0.41 | 1.14 | 0.92 |
| 1079 | -24.23 | 1.27 | 1.39 | 0.42 | 1.14 | 0.92 |
| 1080 | -24.12 | 1.27 | 1.39 | 0.43 | 1.14 | 0.92 |
| 1081 | -24.04 | 1.27 | 1.39 | 0.44 | 1.15 | 0.92 |
| 1082 | -23.93 | 1.27 | 1.39 | 0.45 | 1.15 | 0.92 |
| 1083 | -23.83 | 1.27 | 1.38 | 0.46 | 1.15 | 0.92 |
| 1084 | -23.73 | 1.27 | 1.38 | 0.46 | 1.15 | 0.93 |
| 1085 | -23.62 | 1.27 | 1.37 | 0.45 | 1.15 | 0.93 |
| 1086 | -22.56 | 1.19 | 1.31 | 3.89 | 1.10 | 0.94 |
| 1087 | – | – | – | – | – | – |
| 1088 | – | – | – | – | – | – |
| 1089 | -22.72 | 1.20 | 1.32 | 3.58 | 1.10 | 0.94 |
| 1090 | -22.88 | 1.21 | 1.33 | 3.28 | 1.11 | 0.94 |
| 1091 | -23.03 | 1.22 | 1.35 | 2.99 | 1.11 | 0.94 |
| 1092 | -23.16 | 1.23 | 1.36 | 2.71 | 1.12 | 0.93 |
| 1093 | -23.29 | 1.24 | 1.37 | 2.45 | 1.12 | 0.93 |
| 1094 | -23.40 | 1.24 | 1.38 | 2.21 | 1.13 | 0.93 |
| 1095 | -23.50 | 1.25 | 1.38 | 1.98 | 1.13 | 0.93 |
| 1096 | -23.59 | 1.26 | 1.39 | 1.78 | 1.14 | 0.93 |
| 1097 | -23.65 | 1.27 | 1.40 | 1.60 | 1.14 | 0.92 |
| 1098 | -23.70 | 1.27 | 1.41 | 1.44 | 1.15 | 0.92 |
| 1099 | -23.73 | 1.28 | 1.42 | 1.30 | 1.15 | 0.92 |
| 1100 | -23.73 | 1.29 | 1.42 | 1.19 | 1.16 | 0.92 |

[Table 525]

| 1101 | -23.73 | 1.29 | 1.43 | 1.09 | 1.16 | 0.92 |
|------|--------|------|------|------|------|------|
| 1102 | -23.70 | 1.30 | 1.43 | 1.02 | 1.16 | 0.92 |
| 1103 | -23.66 | 1.30 | 1.44 | 0.97 | 1.17 | 0.92 |
| 1104 | -23.62 | 1.31 | 1.44 | 0.93 | 1.17 | 0.92 |
| 1105 | -23.53 | 1.31 | 1.44 | 0.91 | 1.18 | 0.92 |
| 1106 | -23.45 | 1.31 | 1.44 | 0.90 | 1.18 | 0.92 |
| 1107 | -23.37 | 1.31 | 1.44 | 0.91 | 1.18 | 0.92 |
| 1108 | -23.26 | 1.32 | 1.44 | 0.92 | 1.18 | 0.92 |
| 1109 | -23.14 | 1.32 | 1.44 | 0.93 | 1.19 | 0.92 |
| 1110 | -23.05 | 1.32 | 1.44 | 0.94 | 1.19 | 0.92 |
| 1111 | -22.94 | 1.31 | 1.44 | 0.96 | 1.19 | 0.92 |
| 1112 | -22.83 | 1.31 | 1.43 | 0.96 | 1.19 | 0.93 |
| 1113 | -22.66 | 1.31 | 1.43 | 1.04 | 1.20 | 0.93 |
| 1114 | -21.48 | 1.22 | 1.35 | 4.85 | 1.13 | 0.95 |
| 1115 | — | — | — | — | — | — |
| 1116 | — | — | — | — | — | — |
| 1117 | -21.65 | 1.23 | 1.36 | 4.53 | 1.14 | 0.95 |
| 1118 | -21.81 | 1.24 | 1.37 | 4.20 | 1.14 | 0.94 |
| 1119 | -21.97 | 1.25 | 1.38 | 3.89 | 1.15 | 0.94 |
| 1120 | -22.13 | 1.26 | 1.39 | 3.59 | 1.15 | 0.94 |
| 1121 | -22.27 | 1.27 | 1.40 | 3.30 | 1.16 | 0.94 |
| 1122 | -22.40 | 1.28 | 1.41 | 3.03 | 1.16 | 0.93 |
| 1123 | -22.53 | 1.28 | 1.42 | 2.77 | 1.17 | 0.93 |
| 1124 | -22.63 | 1.29 | 1.43 | 2.54 | 1.17 | 0.93 |
| 1125 | -22.72 | 1.30 | 1.44 | 2.32 | 1.18 | 0.93 |
| 1126 | -22.79 | 1.31 | 1.45 | 2.13 | 1.18 | 0.93 |
| 1127 | -22.84 | 1.32 | 1.46 | 1.96 | 1.19 | 0.92 |
| 1128 | -22.87 | 1.32 | 1.47 | 1.81 | 1.19 | 0.92 |
| 1129 | -22.89 | 1.33 | 1.47 | 1.69 | 1.20 | 0.92 |
| 1130 | -22.88 | 1.33 | 1.48 | 1.59 | 1.20 | 0.92 |
| 1131 | -22.86 | 1.34 | 1.48 | 1.51 | 1.20 | 0.92 |
| 1132 | -22.82 | 1.34 | 1.49 | 1.45 | 1.21 | 0.92 |
| 1133 | -22.76 | 1.35 | 1.49 | 1.41 | 1.21 | 0.92 |
| 1134 | -22.69 | 1.35 | 1.49 | 1.39 | 1.22 | 0.92 |
| 1135 | -22.61 | 1.36 | 1.50 | 1.37 | 1.22 | 0.92 |
| 1136 | -22.51 | 1.36 | 1.50 | 1.37 | 1.22 | 0.92 |
| 1137 | -22.42 | 1.36 | 1.50 | 1.38 | 1.23 | 0.92 |
| 1138 | -22.31 | 1.36 | 1.49 | 1.39 | 1.23 | 0.92 |
| 1139 | -22.20 | 1.36 | 1.49 | 1.41 | 1.23 | 0.92 |
| 1140 | -22.08 | 1.36 | 1.49 | 1.42 | 1.23 | 0.92 |
| 1141 | -21.96 | 1.36 | 1.49 | 1.43 | 1.23 | 0.93 |
| 1142 | -21.85 | 1.35 | 1.48 | 1.43 | 1.24 | 0.93 |
| 1143 | -20.57 | 1.26 | 1.39 | 5.49 | 1.17 | 0.95 |
| 1144 | — | — | — | — | — | — |
| 1145 | — | — | — | — | — | — |
| 1146 | -20.74 | 1.27 | 1.41 | 5.15 | 1.17 | 0.95 |
| 1147 | -20.91 | 1.28 | 1.42 | 4.82 | 1.18 | 0.94 |
| 1148 | -21.08 | 1.29 | 1.43 | 4.49 | 1.19 | 0.94 |
| 1149 | -21.24 | 1.30 | 1.44 | 4.17 | 1.19 | 0.94 |
| 1150 | -21.40 | 1.31 | 1.45 | 3.87 | 1.20 | 0.94 |

[Table 526]

| 1151 | -21.54 | 1.32 | 1.46 | 3.59 | 1.20 | 0.93 |
|------|--------|------|------|------|------|------|
| 1152 | -21.66 | 1.32 | 1.47 | 3.32 | 1.21 | 0.93 |
| 1153 | -21.78 | 1.33 | 1.48 | 3.07 | 1.21 | 0.93 |
| 1154 | -21.87 | 1.34 | 1.49 | 2.85 | 1.22 | 0.93 |
| 1155 | -21.95 | 1.35 | 1.50 | 2.64 | 1.22 | 0.93 |
| 1156 | -22.00 | 1.36 | 1.51 | 2.47 | 1.23 | 0.92 |
| 1157 | -22.04 | 1.36 | 1.52 | 2.31 | 1.23 | 0.92 |
| 1158 | -22.06 | 1.37 | 1.52 | 2.18 | 1.23 | 0.92 |
| 1159 | -22.06 | 1.38 | 1.53 | 2.07 | 1.24 | 0.92 |
| 1160 | -22.04 | 1.38 | 1.54 | 1.98 | 1.24 | 0.92 |
| 1161 | -22.00 | 1.39 | 1.54 | 1.91 | 1.25 | 0.92 |
| 1162 | -21.95 | 1.39 | 1.54 | 1.87 | 1.25 | 0.92 |
| 1163 | -21.87 | 1.40 | 1.55 | 1.83 | 1.25 | 0.92 |
| 1164 | -21.80 | 1.40 | 1.55 | 1.82 | 1.26 | 0.92 |
| 1165 | -21.70 | 1.40 | 1.55 | 1.81 | 1.26 | 0.92 |
| 1166 | -21.60 | 1.40 | 1.55 | 1.82 | 1.26 | 0.92 |
| 1167 | -21.48 | 1.40 | 1.55 | 1.83 | 1.27 | 0.92 |
| 1168 | -21.37 | 1.40 | 1.55 | 1.85 | 1.27 | 0.92 |
| 1169 | -21.24 | 1.40 | 1.54 | 1.86 | 1.27 | 0.92 |
| 1170 | -21.12 | 1.40 | 1.54 | 1.87 | 1.28 | 0.93 |
| 1171 | -21.00 | 1.40 | 1.53 | 1.88 | 1.28 | 0.93 |
| 1172 | -19.49 | 1.28 | 1.43 | 6.47 | 1.20 | 0.95 |
| 1173 | — | — | — | — | — | — |
| 1174 | — | — | — | — | — | — |
| 1175 | -19.67 | 1.29 | 1.44 | 6.11 | 1.21 | 0.95 |
| 1176 | -19.86 | 1.31 | 1.45 | 5.76 | 1.21 | 0.95 |
| 1177 | -20.04 | 1.32 | 1.46 | 5.41 | 1.22 | 0.94 |
| 1178 | -20.21 | 1.33 | 1.48 | 5.07 | 1.22 | 0.94 |
| 1179 | -20.38 | 1.34 | 1.49 | 4.74 | 1.23 | 0.94 |
| 1180 | -20.54 | 1.35 | 1.50 | 4.43 | 1.23 | 0.94 |
| 1181 | -20.69 | 1.35 | 1.51 | 4.13 | 1.24 | 0.93 |
| 1182 | -20.82 | 1.36 | 1.52 | 3.85 | 1.24 | 0.93 |
| 1183 | -20.94 | 1.37 | 1.53 | 3.59 | 1.25 | 0.93 |
| 1184 | -21.04 | 1.38 | 1.54 | 3.35 | 1.25 | 0.93 |
| 1185 | -21.12 | 1.39 | 1.55 | 3.14 | 1.26 | 0.93 |
| 1186 | -21.19 | 1.40 | 1.56 | 2.95 | 1.26 | 0.92 |
| 1187 | -21.23 | 1.40 | 1.57 | 2.78 | 1.27 | 0.92 |
| 1188 | -21.26 | 1.41 | 1.57 | 2.64 | 1.27 | 0.92 |
| 1189 | -21.25 | 1.42 | 1.58 | 2.52 | 1.28 | 0.92 |
| 1190 | -21.24 | 1.42 | 1.59 | 2.42 | 1.28 | 0.92 |
| 1191 | -21.20 | 1.43 | 1.59 | 2.35 | 1.28 | 0.92 |
| 1192 | -21.15 | 1.43 | 1.60 | 2.29 | 1.29 | 0.92 |
| 1193 | -21.08 | 1.44 | 1.60 | 2.26 | 1.29 | 0.92 |
| 1194 | -20.99 | 1.44 | 1.60 | 2.23 | 1.30 | 0.92 |
| 1195 | -20.90 | 1.44 | 1.60 | 2.23 | 1.30 | 0.92 |
| 1196 | -20.77 | 1.45 | 1.60 | 2.20 | 1.30 | 0.92 |
| 1197 | -20.68 | 1.45 | 1.60 | 2.24 | 1.31 | 0.92 |
| 1198 | -20.56 | 1.45 | 1.60 | 2.25 | 1.31 | 0.92 |
| 1199 | -20.44 | 1.45 | 1.60 | 2.27 | 1.31 | 0.92 |
| 1200 | -20.32 | 1.45 | 1.59 | 2.29 | 1.32 | 0.92 |
| 1201 | -20.06 | 1.45 | 1.60 | 2.47 | 1.33 | 0.93 |

[Table 527]

| 1266 | -17.02 | 1.67 | 1.87 | 3.84 | 1.49 | 0.90 |
| 1267 | -16.87 | 1.67 | 1.87 | 3.85 | 1.49 | 0.90 |
| 1268 | -16.72 | 1.67 | 1.86 | 3.87 | 1.50 | 0.90 |
| 1269 | -23.72 | 1.09 | 1.18 | 3.69 | 1.00 | 0.94 |
| 1270 | — | — | — | — | — | — |
| 1271 | — | — | — | — | — | — |
| 1272 | -23.87 | 1.09 | 1.19 | 3.39 | 1.01 | 0.94 |
| 1273 | -24.01 | 1.10 | 1.20 | 3.09 | 1.01 | 0.94 |
| 1274 | -24.16 | 1.11 | 1.21 | 2.80 | 1.02 | 0.94 |
| 1275 | -24.30 | 1.12 | 1.22 | 2.52 | 1.02 | 0.93 |
| 1276 | -24.44 | 1.13 | 1.23 | 2.24 | 1.03 | 0.93 |
| 1277 | -24.56 | 1.14 | 1.24 | 1.98 | 1.03 | 0.93 |
| 1278 | -24.68 | 1.15 | 1.25 | 1.73 | 1.04 | 0.93 |
| 1279 | -24.79 | 1.15 | 1.26 | 1.49 | 1.04 | 0.93 |
| 1280 | -24.88 | 1.16 | 1.27 | 1.28 | 1.05 | 0.93 |
| 1281 | -24.96 | 1.17 | 1.28 | 1.08 | 1.05 | 0.92 |
| 1282 | -25.02 | 1.18 | 1.28 | 0.91 | 1.06 | 0.92 |
| 1283 | -25.06 | 1.18 | 1.29 | 0.75 | 1.06 | 0.92 |

[Table 528]

| 1284 | -25.09 | 1.19 | 1.30 | 0.62 | 1.07 | 0.92 |
|------|--------|------|------|------|------|------|
| 1285 | -25.10 | 1.19 | 1.30 | 0.51 | 1.07 | 0.92 |
| 1286 | -25.09 | 1.20 | 1.31 | 0.42 | 1.07 | 0.92 |
| 1287 | -25.06 | 1.20 | 1.31 | 0.35 | 1.08 | 0.92 |
| 1288 | -25.03 | 1.20 | 1.31 | 0.29 | 1.08 | 0.92 |
| 1289 | -24.98 | 1.21 | 1.31 | 0.24 | 1.08 | 0.92 |
| 1290 | -24.92 | 1.21 | 1.31 | 0.21 | 1.09 | 0.92 |
| 1291 | -24.85 | 1.21 | 1.31 | 0.19 | 1.09 | 0.92 |
| 1292 | -24.77 | 1.21 | 1.31 | 0.17 | 1.09 | 0.92 |
| 1293 | -24.69 | 1.21 | 1.31 | 0.15 | 1.09 | 0.92 |
| 1294 | -24.61 | 1.21 | 1.31 | 0.13 | 1.09 | 0.92 |
| 1295 | -24.53 | 1.21 | 1.30 | 0.11 | 1.10 | 0.93 |
| 1296 | -24.44 | 1.21 | 1.30 | 0.08 | 1.10 | 0.93 |
| 1297 | -22.72 | 1.03 | 1.12 | 5.41 | 0.97 | 0.96 |
| 1298 | — | — | — | — | — | — |
| 1299 | -22.85 | 1.04 | 1.13 | 5.13 | 0.98 | 0.96 |
| 1300 | -22.98 | 1.05 | 1.14 | 4.83 | 0.98 | 0.95 |
| 1301 | -23.12 | 1.06 | 1.15 | 4.53 | 0.99 | 0.95 |
| 1302 | -23.26 | 1.07 | 1.16 | 4.23 | 0.99 | 0.95 |
| 1303 | -23.40 | 1.08 | 1.17 | 3.93 | 1.00 | 0.94 |
| 1304 | -23.54 | 1.09 | 1.18 | 3.63 | 1.00 | 0.94 |
| 1305 | -23.69 | 1.10 | 1.19 | 3.33 | 1.01 | 0.94 |
| 1306 | -23.83 | 1.11 | 1.20 | 3.03 | 1.01 | 0.94 |
| 1307 | -23.97 | 1.12 | 1.21 | 2.75 | 1.02 | 0.94 |
| 1308 | -24.10 | 1.12 | 1.22 | 2.47 | 1.03 | 0.93 |
| 1309 | -24.22 | 1.13 | 1.23 | 2.21 | 1.03 | 0.93 |
| 1310 | -24.33 | 1.14 | 1.24 | 1.97 | 1.04 | 0.93 |
| 1311 | -24.43 | 1.15 | 1.25 | 1.74 | 1.04 | 0.93 |
| 1312 | -24.51 | 1.15 | 1.26 | 1.53 | 1.04 | 0.93 |
| 1313 | -24.58 | 1.16 | 1.26 | 1.35 | 1.05 | 0.93 |
| 1314 | -24.62 | 1.17 | 1.27 | 1.18 | 1.05 | 0.93 |
| 1315 | -24.65 | 1.17 | 1.27 | 1.03 | 1.06 | 0.93 |
| 1316 | -24.67 | 1.18 | 1.28 | 0.91 | 1.06 | 0.92 |
| 1317 | -24.67 | 1.18 | 1.28 | 0.80 | 1.07 | 0.92 |
| 1318 | -24.65 | 1.18 | 1.29 | 0.71 | 1.07 | 0.92 |
| 1319 | -24.62 | 1.19 | 1.29 | 0.63 | 1.07 | 0.92 |
| 1320 | -24.58 | 1.19 | 1.29 | 0.57 | 1.07 | 0.92 |
| 1321 | -24.53 | 1.19 | 1.29 | 0.52 | 1.08 | 0.93 |
| 1322 | -24.47 | 1.19 | 1.29 | 0.47 | 1.08 | 0.93 |
| 1323 | -24.41 | 1.19 | 1.29 | 0.42 | 1.08 | 0.93 |
| 1324 | -24.34 | 1.19 | 1.28 | 0.37 | 1.08 | 0.93 |
| 1325 | -24.27 | 1.19 | 1.28 | 0.32 | 1.08 | 0.93 |
| 1326 | -21.94 | 0.99 | 1.06 | 6.80 | 0.95 | 0.98 |
| 1327 | — | — | — | — | — | — |
| 1328 | — | — | — | — | — | — |
| 1329 | -22.03 | 1.00 | 1.07 | 6.55 | 0.95 | 0.97 |
| 1330 | -22.13 | 1.01 | 1.08 | 6.28 | 0.96 | 0.97 |
| 1331 | -22.24 | 1.01 | 1.10 | 6.01 | 0.96 | 0.97 |
| 1332 | -22.36 | 1.02 | 1.11 | 5.73 | 0.97 | 0.96 |
| 1333 | -22.48 | 1.03 | 1.12 | 5.43 | 0.97 | 0.96 |

[Table 529]

| 1334 | -22.61 | 1.04 | 1.13 | 5.14 | 0.98 | 0.95 |
|---|---|---|---|---|---|---|
| 1335 | -22.74 | 1.05 | 1.14 | 4.83 | 0.98 | 0.95 |
| 1336 | -22.88 | 1.06 | 1.15 | 4.53 | 0.99 | 0.95 |
| 1337 | -23.02 | 1.07 | 1.16 | 4.22 | 0.99 | 0.95 |
| 1338 | -23.17 | 1.08 | 1.17 | 3.92 | 1.00 | 0.94 |
| 1339 | -23.31 | 1.09 | 1.18 | 3.61 | 1.01 | 0.94 |
| 1340 | -23.44 | 1.10 | 1.19 | 3.32 | 1.01 | 0.94 |
| 1341 | -23.58 | 1.11 | 1.20 | 3.04 | 1.02 | 0.94 |
| 1342 | -23.70 | 1.11 | 1.21 | 2.76 | 1.02 | 0.94 |
| 1343 | -23.82 | 1.12 | 1.22 | 2.51 | 1.03 | 0.93 |
| 1344 | -23.92 | 1.13 | 1.23 | 2.26 | 1.03 | 0.93 |
| 1345 | -24.00 | 1.14 | 1.23 | 2.04 | 1.04 | 0.93 |
| 1346 | -24.08 | 1.14 | 1.24 | 1.84 | 1.04 | 0.93 |
| 1347 | -24.13 | 1.15 | 1.25 | 1.65 | 1.04 | 0.93 |
| 1348 | -24.17 | 1.15 | 1.25 | 1.49 | 1.05 | 0.93 |
| 1349 | -24.20 | 1.16 | 1.25 | 1.34 | 1.05 | 0.93 |
| 1350 | -24.20 | 1.16 | 1.26 | 1.22 | 1.06 | 0.93 |
| 1351 | -24.20 | 1.16 | 1.26 | 1.10 | 1.06 | 0.93 |
| 1352 | -24.18 | 1.17 | 1.26 | 1.00 | 1.06 | 0.93 |
| 1353 | -24.15 | 1.17 | 1.26 | 0.91 | 1.07 | 0.93 |
| 1354 | -24.11 | 1.17 | 1.26 | 0.83 | 1.07 | 0.93 |
| 1355 | -24.06 | 1.17 | 1.26 | 0.75 | 1.07 | 0.93 |
| 1356 | -24.02 | 1.17 | 1.26 | 0.66 | 1.07 | 0.93 |
| 1357 | -21.25 | 0.94 | 1.01 | 8.07 | 0.92 | 1.00 |
| 1358 | – | – | – | – | – | – |
| 1359 | – | – | – | – | – | – |
| 1360 | -21.30 | 0.95 | 1.02 | 7.87 | 0.93 | 0.99 |
| 1361 | -21.37 | 0.96 | 1.03 | 7.65 | 0.93 | 0.99 |
| 1362 | -21.44 | 0.97 | 1.04 | 7.43 | 0.94 | 0.98 |
| 1363 | -21.52 | 0.98 | 1.05 | 7.19 | 0.94 | 0.98 |
| 1364 | -21.61 | 0.99 | 1.06 | 6.93 | 0.95 | 0.97 |
| 1365 | -21.71 | 1.00 | 1.07 | 6.66 | 0.95 | 0.97 |
| 1366 | -21.82 | 1.01 | 1.08 | 6.39 | 0.96 | 0.97 |
| 1367 | -21.93 | 1.02 | 1.09 | 6.10 | 0.96 | 0.96 |
| 1368 | -22.05 | 1.03 | 1.10 | 5.80 | 0.97 | 0.96 |
| 1369 | -22.18 | 1.04 | 1.11 | 5.50 | 0.97 | 0.96 |
| 1370 | -22.31 | 1.04 | 1.12 | 5.19 | 0.98 | 0.95 |
| 1371 | -22.44 | 1.05 | 1.14 | 4.88 | 0.98 | 0.95 |
| 1372 | -22.58 | 1.06 | 1.15 | 4.57 | 0.99 | 0.95 |
| 1373 | -22.72 | 1.07 | 1.16 | 4.27 | 0.99 | 0.95 |
| 1374 | -22.85 | 1.08 | 1.16 | 3.96 | 1.00 | 0.94 |
| 1375 | -22.99 | 1.09 | 1.17 | 3.67 | 1.01 | 0.94 |
| 1376 | -23.11 | 1.10 | 1.18 | 3.38 | 1.01 | 0.94 |
| 1377 | -23.23 | 1.10 | 1.19 | 3.11 | 1.02 | 0.94 |
| 1378 | -23.34 | 1.11 | 1.20 | 2.85 | 1.02 | 0.94 |
| 1379 | -23.43 | 1.12 | 1.21 | 2.61 | 1.03 | 0.94 |
| 1380 | -23.52 | 1.12 | 1.21 | 2.39 | 1.03 | 0.94 |
| 1381 | -23.58 | 1.13 | 1.22 | 2.18 | 1.03 | 0.93 |
| 1382 | -23.63 | 1.13 | 1.22 | 1.99 | 1.04 | 0.93 |
| 1383 | -23.67 | 1.14 | 1.23 | 1.82 | 1.04 | 0.93 |

[Table 530]

| 1384 | -23.69 | 1.14 | 1.23 | 1.67 | 1.05 | 0.93 |
| 1385 | -23.69 | 1.14 | 1.23 | 1.53 | 1.05 | 0.94 |
| 1386 | -23.69 | 1.14 | 1.23 | 1.39 | 1.05 | 0.94 |
| 1387 | -23.68 | 1.15 | 1.23 | 1.27 | 1.05 | 0.94 |
| 1388 | -23.66 | 1.15 | 1.23 | 1.14 | 1.05 | 0.94 |
| 1389 | -20.69 | 0.89 | 0.96 | 9.14 | 0.90 | 1.02 |
| 1390 | – | – | – | – | – | – |
| 1391 | -20.70 | 0.90 | 0.97 | 9.01 | 0.90 | 1.01 |
| 1392 | -20.73 | 0.91 | 0.98 | 8.87 | 0.91 | 1.01 |
| 1393 | -20.76 | 0.92 | 0.99 | 8.70 | 0.91 | 1.00 |
| 1394 | -20.80 | 0.93 | 1.00 | 8.52 | 0.92 | 1.00 |
| 1395 | -20.85 | 0.94 | 1.01 | 8.32 | 0.92 | 0.99 |
| 1396 | -20.91 | 0.95 | 1.02 | 8.11 | 0.93 | 0.99 |
| 1397 | -20.97 | 0.96 | 1.03 | 7.88 | 0.93 | 0.99 |
| 1398 | -21.05 | 0.97 | 1.04 | 7.64 | 0.94 | 0.98 |
| 1399 | -21.13 | 0.98 | 1.05 | 7.38 | 0.94 | 0.98 |
| 1400 | -21.22 | 0.99 | 1.06 | 7.12 | 0.95 | 0.97 |
| 1401 | -21.32 | 1.00 | 1.07 | 6.84 | 0.95 | 0.97 |
| 1402 | -21.43 | 1.01 | 1.08 | 6.54 | 0.96 | 0.96 |
| 1403 | -21.54 | 1.02 | 1.09 | 6.25 | 0.96 | 0.96 |
| 1404 | -21.66 | 1.02 | 1.10 | 5.94 | 0.97 | 0.96 |
| 1405 | -21.79 | 1.03 | 1.11 | 5.63 | 0.97 | 0.95 |
| 1406 | -21.92 | 1.04 | 1.12 | 5.31 | 0.98 | 0.95 |
| 1407 | -22.05 | 1.05 | 1.13 | 5.00 | 0.98 | 0.95 |
| 1408 | -22.19 | 1.06 | 1.14 | 4.69 | 0.99 | 0.95 |
| 1409 | -22.32 | 1.07 | 1.15 | 4.38 | 0.99 | 0.95 |
| 1410 | -22.45 | 1.08 | 1.16 | 4.08 | 1.00 | 0.94 |
| 1411 | -22.57 | 1.08 | 1.16 | 3.79 | 1.00 | 0.94 |
| 1412 | -22.69 | 1.09 | 1.17 | 3.52 | 1.01 | 0.94 |
| 1413 | -22.79 | 1.10 | 1.18 | 3.25 | 1.01 | 0.94 |
| 1414 | -22.88 | 1.10 | 1.18 | 3.00 | 1.02 | 0.94 |
| 1415 | -22.96 | 1.11 | 1.19 | 2.77 | 1.02 | 0.94 |
| 1416 | -23.02 | 1.11 | 1.20 | 2.55 | 1.03 | 0.94 |
| 1417 | -23.07 | 1.11 | 1.20 | 2.35 | 1.03 | 0.94 |
| 1418 | -23.11 | 1.12 | 1.20 | 2.16 | 1.03 | 0.94 |
| 1419 | -23.14 | 1.12 | 1.20 | 1.98 | 1.04 | 0.94 |
| 1420 | -23.15 | 1.12 | 1.20 | 1.80 | 1.04 | 0.94 |
| 1421 | -20.30 | 0.83 | 0.90 | 9.98 | 0.86 | 1.05 |
| 1422 | – | – | – | – | – | – |
| 1423 | – | – | – | – | – | – |
| 1424 | -20.27 | 0.84 | 0.91 | 9.94 | 0.87 | 1.04 |
| 1425 | -20.24 | 0.85 | 0.92 | 9.90 | 0.87 | 1.04 |
| 1426 | -20.22 | 0.86 | 0.92 | 9.83 | 0.88 | 1.03 |
| 1427 | -20.22 | 0.87 | 0.93 | 9.75 | 0.88 | 1.03 |
| 1428 | -20.21 | 0.88 | 0.94 | 9.64 | 0.89 | 1.02 |
| 1429 | -20.22 | 0.89 | 0.95 | 9.52 | 0.89 | 1.02 |
| 1430 | -20.23 | 0.90 | 0.96 | 9.38 | 0.90 | 1.01 |
| 1431 | -20.25 | 0.91 | 0.97 | 9.22 | 0.90 | 1.01 |
| 1432 | -20.28 | 0.92 | 0.98 | 9.05 | 0.91 | 1.00 |
| 1433 | -20.32 | 0.93 | 0.99 | 8.85 | 0.91 | 1.00 |

[Table 531]

| 1434 | -20.37 | 0.94 | 1.00 | 8.64 | 0.92 | 0.99 |
|------|--------|------|------|------|------|------|
| 1435 | -20.43 | 0.95 | 1.01 | 8.42 | 0.92 | 0.99 |
| 1436 | -20.49 | 0.96 | 1.02 | 8.17 | 0.93 | 0.98 |
| 1437 | -20.57 | 0.97 | 1.03 | 7.92 | 0.93 | 0.98 |
| 1438 | -20.65 | 0.97 | 1.04 | 7.65 | 0.94 | 0.97 |
| 1439 | -20.74 | 0.98 | 1.05 | 7.37 | 0.94 | 0.97 |
| 1440 | -20.84 | 0.99 | 1.06 | 7.07 | 0.95 | 0.97 |
| 1441 | -20.95 | 1.00 | 1.07 | 6.77 | 0.95 | 0.96 |
| 1442 | -21.06 | 1.01 | 1.08 | 6.46 | 0.96 | 0.96 |
| 1443 | -21.19 | 1.02 | 1.09 | 6.14 | 0.96 | 0.96 |
| 1444 | -21.31 | 1.03 | 1.10 | 5.82 | 0.97 | 0.95 |
| 1445 | -21.44 | 1.04 | 1.11 | 5.50 | 0.97 | 0.95 |
| 1446 | -21.57 | 1.05 | 1.12 | 5.19 | 0.98 | 0.95 |
| 1447 | -21.70 | 1.05 | 1.13 | 4.87 | 0.98 | 0.95 |
| 1448 | -21.82 | 1.06 | 1.13 | 4.56 | 0.99 | 0.95 |
| 1449 | -21.94 | 1.07 | 1.14 | 4.27 | 0.99 | 0.95 |
| 1450 | -22.06 | 1.07 | 1.15 | 3.98 | 1.00 | 0.95 |
| 1451 | -22.16 | 1.08 | 1.15 | 3.70 | 1.00 | 0.94 |
| 1452 | -22.25 | 1.08 | 1.16 | 3.43 | 1.01 | 0.94 |
| 1453 | -22.33 | 1.09 | 1.16 | 3.18 | 1.01 | 0.94 |
| 1454 | -22.40 | 1.09 | 1.16 | 2.93 | 1.01 | 0.95 |
| 1455 | -22.46 | 1.09 | 1.16 | 2.69 | 1.02 | 0.95 |
| 1456 | -20.10 | 0.78 | 0.85 | 10.32 | 0.83 | 1.07 |
| 1457 | – | – | – | – | – | – |
| 1458 | – | – | – | – | – | – |
| 1459 | -20.03 | 0.79 | 0.85 | 10.39 | 0.84 | 1.06 |
| 1460 | -19.95 | 0.80 | 0.86 | 10.44 | 0.84 | 1.06 |
| 1461 | -19.89 | 0.81 | 0.87 | 10.46 | 0.85 | 1.05 |
| 1462 | -19.84 | 0.82 | 0.88 | 10.47 | 0.85 | 1.05 |
| 1463 | -19.79 | 0.83 | 0.89 | 10.46 | 0.86 | 1.05 |
| 1464 | -19.75 | 0.84 | 0.90 | 10.43 | 0.86 | 1.04 |
| 1465 | -19.72 | 0.85 | 0.91 | 10.38 | 0.87 | 1.04 |
| 1466 | -19.68 | 0.86 | 0.92 | 10.31 | 0.87 | 1.03 |
| 1467 | -19.67 | 0.87 | 0.93 | 10.21 | 0.88 | 1.03 |
| 1468 | -19.67 | 0.88 | 0.94 | 10.10 | 0.88 | 1.02 |
| 1469 | -19.67 | 0.88 | 0.94 | 9.97 | 0.89 | 1.01 |
| 1470 | -19.68 | 0.89 | 0.95 | 9.83 | 0.89 | 1.01 |
| 1471 | -19.69 | 0.90 | 0.96 | 9.66 | 0.90 | 1.00 |
| 1472 | -19.72 | 0.91 | 0.97 | 9.47 | 0.90 | 1.00 |
| 1473 | -19.75 | 0.92 | 0.98 | 9.26 | 0.91 | 0.99 |
| 1474 | -19.80 | 0.93 | 0.99 | 9.04 | 0.91 | 0.99 |
| 1475 | -19.85 | 0.94 | 1.00 | 8.80 | 0.92 | 0.99 |
| 1476 | -19.91 | 0.95 | 1.01 | 8.54 | 0.92 | 0.98 |
| 1477 | -19.98 | 0.96 | 1.02 | 8.27 | 0.93 | 0.98 |
| 1478 | -20.07 | 0.97 | 1.03 | 7.99 | 0.93 | 0.97 |
| 1479 | -20.16 | 0.98 | 1.04 | 7.69 | 0.94 | 0.97 |
| 1480 | -20.26 | 0.99 | 1.05 | 7.39 | 0.94 | 0.97 |
| 1481 | -20.36 | 1.00 | 1.06 | 7.07 | 0.95 | 0.96 |
| 1482 | -20.47 | 1.01 | 1.07 | 6.75 | 0.95 | 0.96 |
| 1483 | -20.59 | 1.01 | 1.08 | 6.42 | 0.96 | 0.96 |

[Table 532]

| 1484 | -20.72 | 1.02 | 1.08 | 6.10 | 0.96 | 0.95 |
|------|--------|------|------|-------|------|------|
| 1485 | -20.84 | 1.03 | 1.09 | 5.77 | 0.97 | 0.95 |
| 1486 | -20.97 | 1.04 | 1.10 | 5.44 | 0.97 | 0.95 |
| 1487 | -21.09 | 1.04 | 1.11 | 5.11 | 0.98 | 0.95 |
| 1488 | -21.22 | 1.05 | 1.11 | 4.79 | 0.98 | 0.95 |
| 1489 | -21.33 | 1.05 | 1.12 | 4.48 | 0.99 | 0.95 |
| 1490 | -21.44 | 1.06 | 1.12 | 4.17 | 0.99 | 0.95 |
| 1491 | -21.55 | 1.06 | 1.12 | 3.87 | 0.99 | 0.95 |
| 1492 | -20.12 | 0.74 | 0.79 | 10.21 | 0.80 | 1.09 |
| 1493 | – | – | – | – | – | – |
| 1494 | – | – | – | – | – | – |
| 1495 | -20.00 | 0.74 | 0.80 | 10.38 | 0.80 | 1.09 |
| 1496 | -19.87 | 0.75 | 0.81 | 10.54 | 0.81 | 1.08 |
| 1497 | -19.76 | 0.76 | 0.82 | 10.67 | 0.81 | 1.08 |
| 1498 | -19.65 | 0.77 | 0.83 | 10.79 | 0.82 | 1.07 |
| 1499 | -19.56 | 0.78 | 0.84 | 10.88 | 0.83 | 1.07 |
| 1500 | -19.47 | 0.79 | 0.84 | 10.95 | 0.83 | 1.06 |
| 1501 | -19.39 | 0.80 | 0.85 | 11.01 | 0.84 | 1.06 |
| 1502 | -19.31 | 0.81 | 0.86 | 11.04 | 0.84 | 1.06 |
| 1503 | -19.25 | 0.81 | 0.87 | 11.05 | 0.85 | 1.05 |
| 1504 | -19.19 | 0.82 | 0.88 | 11.04 | 0.85 | 1.05 |
| 1505 | -19.14 | 0.83 | 0.89 | 11.00 | 0.86 | 1.04 |
| 1506 | -19.10 | 0.84 | 0.90 | 10.95 | 0.86 | 1.03 |
| 1507 | -19.06 | 0.85 | 0.91 | 10.87 | 0.87 | 1.03 |
| 1508 | -19.04 | 0.86 | 0.92 | 10.77 | 0.87 | 1.02 |
| 1509 | -19.02 | 0.87 | 0.93 | 10.66 | 0.88 | 1.02 |
| 1510 | -19.01 | 0.88 | 0.93 | 10.52 | 0.88 | 1.01 |
| 1511 | -19.01 | 0.89 | 0.94 | 10.36 | 0.89 | 1.01 |
| 1512 | -19.02 | 0.90 | 0.95 | 10.18 | 0.89 | 1.00 |
| 1513 | -19.04 | 0.91 | 0.96 | 9.98 | 0.90 | 1.00 |
| 1514 | -19.07 | 0.92 | 0.97 | 9.76 | 0.90 | 0.99 |
| 1515 | -19.11 | 0.93 | 0.98 | 9.53 | 0.91 | 0.99 |
| 1516 | -19.15 | 0.94 | 0.99 | 9.27 | 0.91 | 0.98 |
| 1517 | -19.21 | 0.94 | 1.00 | 9.00 | 0.92 | 0.98 |
| 1518 | -19.28 | 0.95 | 1.01 | 8.72 | 0.92 | 0.98 |
| 1519 | -19.36 | 0.96 | 1.02 | 8.42 | 0.93 | 0.97 |
| 1520 | -19.44 | 0.97 | 1.03 | 8.11 | 0.93 | 0.97 |
| 1521 | -19.54 | 0.98 | 1.03 | 7.79 | 0.94 | 0.97 |
| 1522 | -19.64 | 0.99 | 1.04 | 7.46 | 0.94 | 0.96 |
| 1523 | -19.76 | 0.99 | 1.05 | 7.12 | 0.95 | 0.96 |
| 1524 | -19.87 | 1.00 | 1.06 | 6.77 | 0.95 | 0.96 |
| 1525 | -20.00 | 1.01 | 1.06 | 6.42 | 0.96 | 0.96 |
| 1526 | -20.13 | 1.01 | 1.07 | 6.07 | 0.96 | 0.96 |
| 1527 | -20.26 | 1.02 | 1.07 | 5.71 | 0.96 | 0.96 |
| 1528 | -20.39 | 1.02 | 1.08 | 5.35 | 0.97 | 0.96 |
| 1529 | -20.63 | 0.68 | 0.73 | 9.21 | 0.75 | 1.11 |
| 1530 | – | – | – | – | – | – |
| 1531 | – | – | – | – | – | – |
| 1532 | -20.43 | 0.68 | 0.74 | 9.52 | 0.75 | 1.11 |
| 1533 | -20.24 | 0.69 | 0.75 | 9.81 | 0.76 | 1.11 |

[Table 533]

566

| 1534 | -20.06 | 0.70 | 0.75 | 10.08 | 0.77 | 1.10 |
|------|--------|------|------|-------|------|------|
| 1535 | -19.88 | 0.71 | 0.76 | 10.33 | 0.78 | 1.10 |
| 1536 | -19.72 | 0.72 | 0.77 | 10.57 | 0.78 | 1.10 |
| 1537 | -19.57 | 0.73 | 0.78 | 10.78 | 0.79 | 1.09 |
| 1538 | -19.42 | 0.74 | 0.79 | 10.98 | 0.80 | 1.09 |
| 1539 | -19.28 | 0.74 | 0.80 | 11.15 | 0.80 | 1.08 |
| 1540 | -19.15 | 0.75 | 0.81 | 11.30 | 0.81 | 1.08 |
| 1541 | -19.03 | 0.76 | 0.82 | 11.43 | 0.81 | 1.08 |
| 1542 | -18.92 | 0.77 | 0.82 | 11.53 | 0.82 | 1.07 |
| 1543 | -18.82 | 0.78 | 0.83 | 11.61 | 0.83 | 1.07 |
| 1544 | -18.72 | 0.79 | 0.84 | 11.67 | 0.83 | 1.06 |
| 1545 | -18.63 | 0.80 | 0.85 | 11.71 | 0.84 | 1.06 |
| 1546 | -18.55 | 0.81 | 0.86 | 11.72 | 0.84 | 1.05 |
| 1547 | -18.48 | 0.82 | 0.87 | 11.71 | 0.85 | 1.05 |
| 1548 | -18.42 | 0.82 | 0.88 | 11.68 | 0.85 | 1.04 |
| 1549 | -18.36 | 0.83 | 0.89 | 11.63 | 0.86 | 1.03 |
| 1550 | -18.32 | 0.84 | 0.89 | 11.55 | 0.86 | 1.03 |
| 1551 | -18.28 | 0.85 | 0.90 | 11.44 | 0.87 | 1.02 |
| 1552 | -18.25 | 0.86 | 0.91 | 11.32 | 0.87 | 1.02 |
| 1553 | -18.23 | 0.87 | 0.92 | 11.17 | 0.88 | 1.01 |
| 1554 | -18.22 | 0.88 | 0.93 | 11.00 | 0.88 | 1.01 |
| 1555 | -18.22 | 0.89 | 0.94 | 10.81 | 0.89 | 1.00 |
| 1556 | -18.23 | 0.90 | 0.95 | 10.60 | 0.89 | 1.00 |
| 1557 | -18.24 | 0.91 | 0.96 | 10.37 | 0.90 | 0.99 |
| 1558 | -18.27 | 0.92 | 0.96 | 10.12 | 0.90 | 0.99 |
| 1559 | -18.31 | 0.93 | 0.97 | 9.85 | 0.90 | 0.98 |
| 1560 | -18.36 | 0.93 | 0.98 | 9.57 | 0.91 | 0.98 |
| 1561 | -18.42 | 0.94 | 0.99 | 9.26 | 0.91 | 0.98 |
| 1562 | -18.50 | 0.95 | 1.00 | 8.94 | 0.92 | 0.97 |
| 1563 | -18.58 | 0.96 | 1.00 | 8.61 | 0.92 | 0.97 |
| 1564 | -18.68 | 0.96 | 1.01 | 8.26 | 0.93 | 0.97 |
| 1565 | -18.78 | 0.97 | 1.02 | 7.90 | 0.93 | 0.96 |
| 1566 | -18.90 | 0.98 | 1.02 | 7.52 | 0.93 | 0.96 |
| 1567 | -19.03 | 0.98 | 1.03 | 7.13 | 0.94 | 0.96 |
| 1568 | -21.38 | 0.62 | 0.67 | 7.69 | 0.69 | 1.12 |
| 1569 | — | — | — | — | — | — |
| 1570 | — | — | — | — | — | — |
| 1571 | -21.11 | 0.63 | 0.68 | 8.12 | 0.70 | 1.12 |
| 1572 | -20.84 | 0.64 | 0.69 | 8.54 | 0.71 | 1.12 |
| 1573 | -20.59 | 0.65 | 0.69 | 8.94 | 0.72 | 1.12 |
| 1574 | -19.90 | 0.66 | 0.68 | 9.24 | 0.71 | 1.08 |
| 1575 | -20.12 | 0.66 | 0.71 | 9.69 | 0.74 | 1.11 |
| 1576 | -19.89 | 0.67 | 0.72 | 10.04 | 0.74 | 1.11 |
| 1577 | -19.68 | 0.68 | 0.73 | 10.36 | 0.75 | 1.11 |
| 1578 | -19.47 | 0.69 | 0.74 | 10.67 | 0.76 | 1.11 |
| 1579 | -19.28 | 0.70 | 0.75 | 10.95 | 0.77 | 1.10 |
| 1580 | -19.09 | 0.71 | 0.76 | 11.21 | 0.77 | 1.10 |
| 1581 | -18.92 | 0.72 | 0.77 | 11.45 | 0.78 | 1.10 |
| 1582 | -18.75 | 0.73 | 0.78 | 11.67 | 0.79 | 1.09 |
| 1583 | -18.59 | 0.73 | 0.79 | 11.86 | 0.79 | 1.09 |

[Table 534]

| 1584 | -18.44 | 0.74 | 0.79 | 12.03 | 0.80 | 1.08 |
|------|--------|------|------|-------|------|------|
| 1585 | -18.31 | 0.75 | 0.80 | 12.18 | 0.81 | 1.08 |
| 1586 | -18.17 | 0.76 | 0.81 | 12.30 | 0.81 | 1.07 |
| 1587 | -18.05 | 0.77 | 0.82 | 12.39 | 0.82 | 1.07 |
| 1588 | -17.94 | 0.78 | 0.83 | 12.46 | 0.82 | 1.06 |
| 1589 | -17.83 | 0.79 | 0.84 | 12.51 | 0.83 | 1.06 |
| 1590 | -17.73 | 0.80 | 0.85 | 12.52 | 0.83 | 1.05 |
| 1591 | -17.65 | 0.81 | 0.85 | 12.52 | 0.84 | 1.05 |
| 1592 | -17.57 | 0.82 | 0.86 | 12.49 | 0.84 | 1.04 |
| 1593 | -17.50 | 0.82 | 0.87 | 12.43 | 0.85 | 1.03 |
| 1594 | -17.43 | 0.83 | 0.88 | 12.35 | 0.85 | 1.03 |
| 1595 | -17.38 | 0.84 | 0.89 | 12.24 | 0.86 | 1.02 |
| 1596 | -17.33 | 0.85 | 0.90 | 12.11 | 0.86 | 1.02 |
| 1597 | -17.30 | 0.86 | 0.90 | 11.95 | 0.87 | 1.01 |
| 1598 | -17.27 | 0.87 | 0.91 | 11.77 | 0.87 | 1.01 |
| 1599 | -17.25 | 0.88 | 0.92 | 11.57 | 0.88 | 1.00 |
| 1600 | -17.25 | 0.89 | 0.93 | 11.34 | 0.88 | 1.00 |
| 1601 | -17.26 | 0.89 | 0.93 | 11.09 | 0.88 | 0.99 |
| 1602 | -17.27 | 0.90 | 0.94 | 10.82 | 0.89 | 0.99 |
| 1603 | -17.30 | 0.91 | 0.95 | 10.53 | 0.89 | 0.98 |
| 1604 | -17.35 | 0.92 | 0.95 | 10.21 | 0.90 | 0.98 |
| 1605 | -17.41 | 0.92 | 0.96 | 9.88 | 0.90 | 0.98 |
| 1606 | -17.48 | 0.93 | 0.97 | 9.52 | 0.90 | 0.97 |
| 1607 | -17.57 | 0.94 | 0.97 | 9.14 | 0.91 | 0.97 |
| 1608 | -22.67 | 0.56 | 0.60 | 5.37 | 0.63 | 1.11 |
| 1609 | – | – | – | – | – | – |
| 1610 | – | – | – | – | – | – |
| 1611 | -22.30 | 0.57 | 0.61 | 5.92 | 0.64 | 1.12 |
| 1612 | -21.94 | 0.58 | 0.62 | 6.47 | 0.65 | 1.12 |
| 1613 | -21.60 | 0.59 | 0.63 | 7.00 | 0.66 | 1.12 |
| 1614 | -21.27 | 0.60 | 0.64 | 7.51 | 0.67 | 1.12 |
| 1615 | -20.94 | 0.61 | 0.65 | 8.01 | 0.68 | 1.12 |
| 1616 | -20.64 | 0.62 | 0.66 | 8.50 | 0.69 | 1.12 |
| 1617 | -20.34 | 0.63 | 0.67 | 8.97 | 0.70 | 1.12 |
| 1618 | -20.06 | 0.64 | 0.68 | 9.42 | 0.71 | 1.12 |
| 1619 | -19.78 | 0.64 | 0.69 | 9.85 | 0.72 | 1.12 |
| 1620 | -19.52 | 0.65 | 0.70 | 10.25 | 0.73 | 1.12 |
| 1621 | -19.26 | 0.66 | 0.71 | 10.64 | 0.74 | 1.12 |
| 1622 | -19.01 | 0.67 | 0.72 | 11.01 | 0.74 | 1.11 |
| 1623 | -18.80 | 0.68 | 0.73 | 11.36 | 0.75 | 1.11 |
| 1624 | -18.57 | 0.69 | 0.74 | 11.67 | 0.76 | 1.11 |
| 1625 | -18.36 | 0.70 | 0.74 | 11.97 | 0.77 | 1.10 |
| 1626 | -18.16 | 0.71 | 0.75 | 12.24 | 0.77 | 1.10 |
| 1627 | -17.97 | 0.71 | 0.76 | 12.48 | 0.78 | 1.10 |
| 1628 | -17.79 | 0.72 | 0.77 | 12.70 | 0.79 | 1.09 |
| 1629 | -17.62 | 0.73 | 0.78 | 12.89 | 0.79 | 1.09 |
| 1630 | -17.45 | 0.74 | 0.79 | 13.06 | 0.80 | 1.08 |
| 1631 | -17.30 | 0.75 | 0.80 | 13.19 | 0.80 | 1.08 |
| 1632 | -17.15 | 0.76 | 0.80 | 13.30 | 0.81 | 1.07 |
| 1633 | -17.02 | 0.77 | 0.81 | 13.39 | 0.81 | 1.06 |

[Table 535]

568

| | | | | | | |
|------|--------|------|------|-------|------|------|
| 1634 | -16.89 | 0.78 | 0.82 | 13.44 | 0.82 | 1.06 |
| 1635 | -16.77 | 0.78 | 0.83 | 13.47 | 0.82 | 1.05 |
| 1636 | -16.66 | 0.79 | 0.84 | 13.46 | 0.83 | 1.05 |
| 1637 | -16.56 | 0.80 | 0.84 | 13.43 | 0.83 | 1.04 |
| 1638 | -16.47 | 0.81 | 0.85 | 13.38 | 0.84 | 1.04 |
| 1639 | -16.38 | 0.82 | 0.86 | 13.29 | 0.84 | 1.03 |
| 1640 | -16.30 | 0.83 | 0.87 | 13.17 | 0.85 | 1.02 |
| 1641 | -16.24 | 0.84 | 0.87 | 13.03 | 0.85 | 1.02 |
| 1642 | -16.19 | 0.84 | 0.88 | 12.86 | 0.85 | 1.01 |
| 1643 | -16.14 | 0.85 | 0.89 | 12.67 | 0.86 | 1.01 |
| 1644 | -16.11 | 0.86 | 0.89 | 12.44 | 0.86 | 1.00 |
| 1645 | -16.09 | 0.87 | 0.90 | 12.19 | 0.87 | 1.00 |
| 1646 | -16.09 | 0.87 | 0.91 | 11.91 | 0.87 | 0.99 |
| 1647 | -16.10 | 0.88 | 0.91 | 11.60 | 0.87 | 0.99 |
| 1648 | -16.13 | 0.89 | 0.92 | 11.26 | 0.87 | 0.99 |
| 1649 | -25.14 | 0.49 | 0.50 | 1.71 | 0.53 | 1.07 |
| 1650 | — | — | — | — | — | — |
| 1651 | -24.65 | 0.50 | 0.51 | 2.32 | 0.54 | 1.08 |
| 1652 | -24.18 | 0.51 | 0.53 | 2.93 | 0.56 | 1.09 |
| 1653 | -23.71 | 0.52 | 0.54 | 3.55 | 0.57 | 1.10 |
| 1654 | -23.26 | 0.53 | 0.55 | 4.17 | 0.58 | 1.10 |
| 1655 | -22.82 | 0.54 | 0.56 | 4.80 | 0.60 | 1.11 |
| 1656 | -22.39 | 0.55 | 0.58 | 5.42 | 0.61 | 1.11 |
| 1657 | -21.98 | 0.56 | 0.59 | 6.03 | 0.62 | 1.12 |
| 1658 | -21.58 | 0.57 | 0.60 | 6.64 | 0.63 | 1.12 |
| 1659 | -21.19 | 0.57 | 0.61 | 7.23 | 0.65 | 1.12 |
| 1660 | -20.81 | 0.58 | 0.62 | 7.81 | 0.66 | 1.13 |
| 1661 | -20.45 | 0.59 | 0.63 | 8.37 | 0.67 | 1.13 |
| 1662 | -20.10 | 0.60 | 0.64 | 8.92 | 0.68 | 1.13 |
| 1663 | -19.77 | 0.61 | 0.65 | 9.45 | 0.69 | 1.13 |
| 1664 | -19.44 | 0.62 | 0.66 | 9.95 | 0.70 | 1.13 |
| 1665 | -19.13 | 0.63 | 0.67 | 10.44 | 0.71 | 1.13 |
| 1666 | -18.83 | 0.64 | 0.68 | 10.90 | 0.72 | 1.12 |
| 1667 | -18.54 | 0.65 | 0.69 | 11.34 | 0.73 | 1.12 |
| 1668 | -18.26 | 0.66 | 0.70 | 11.76 | 0.73 | 1.12 |
| 1669 | -18.00 | 0.67 | 0.71 | 12.15 | 0.74 | 1.12 |
| 1670 | -17.75 | 0.67 | 0.72 | 12.51 | 0.75 | 1.11 |
| 1671 | -17.51 | 0.68 | 0.73 | 12.84 | 0.76 | 1.11 |
| 1672 | -17.28 | 0.69 | 0.74 | 13.15 | 0.76 | 1.10 |
| 1673 | -17.05 | 0.70 | 0.74 | 13.43 | 0.77 | 1.10 |
| 1674 | -16.84 | 0.71 | 0.75 | 13.68 | 0.78 | 1.10 |
| 1675 | -16.64 | 0.72 | 0.76 | 13.90 | 0.78 | 1.09 |
| 1676 | -16.45 | 0.73 | 0.77 | 14.09 | 0.79 | 1.08 |
| 1677 | -16.27 | 0.74 | 0.78 | 14.25 | 0.79 | 1.08 |
| 1678 | -16.09 | 0.74 | 0.78 | 14.37 | 0.80 | 1.07 |
| 1679 | -15.93 | 0.75 | 0.79 | 14.47 | 0.80 | 1.07 |
| 1680 | -15.78 | 0.76 | 0.80 | 14.54 | 0.81 | 1.06 |
| 1681 | -15.63 | 0.77 | 0.81 | 14.57 | 0.81 | 1.06 |
| 1682 | -15.49 | 0.78 | 0.81 | 14.57 | 0.82 | 1.05 |
| 1683 | -15.37 | 0.78 | 0.82 | 14.54 | 0.82 | 1.04 |
| 1684 | -15.25 | 0.79 | 0.83 | 14.47 | 0.82 | 1.04 |
| 1685 | -15.14 | 0.80 | 0.83 | 14.37 | 0.83 | 1.03 |
| 1686 | -15.05 | 0.81 | 0.84 | 14.24 | 0.83 | 1.03 |
| 1687 | -14.96 | 0.82 | 0.84 | 14.08 | 0.83 | 1.02 |
| 1688 | -14.89 | 0.82 | 0.85 | 13.88 | 0.84 | 1.02 |
| 1689 | -14.83 | 0.83 | 0.85 | 13.65 | 0.84 | 1.01 |
| 1690 | -14.79 | 0.83 | 0.86 | 13.38 | 0.84 | 1.01 |
| 1691 | — | — | — | — | — | — |
| 1692 | — | — | — | — | — | — |
| 1693 | -25.05 | 0.49 | 0.50 | 1.77 | 0.52 | 1.07 |

[Table 536]

| | | | | | | |
|---|---|---|---|---|---|---|
| 2826 | -24.18 | 1.04 | 1.12 | 4.13 | 0.97 | 0.96 |
| 2827 | – | – | – | – | – | – |
| 2828 | – | – | – | – | – | – |
| 2829 | -24.24 | 1.04 | 1.13 | 3.95 | 0.98 | 0.96 |
| 2830 | -24.40 | 1.06 | 1.15 | 3.46 | 0.99 | 0.95 |
| 2831 | -24.48 | 1.10 | 1.18 | 2.88 | 1.01 | 0.94 |
| 2832 | -24.29 | 1.12 | 1.20 | 2.65 | 1.02 | 0.94 |
| 2833 | -24.23 | 1.12 | 1.20 | 2.64 | 1.03 | 0.94 |
| 2834 | -24.15 | 1.12 | 1.20 | 2.64 | 1.03 | 0.94 |
| 2835 | -24.08 | 1.13 | 1.20 | 2.64 | 1.03 | 0.94 |
| 2836 | -24.00 | 1.13 | 1.20 | 2.65 | 1.03 | 0.94 |
| 2837 | -23.91 | 1.13 | 1.20 | 2.66 | 1.03 | 0.94 |
| 2838 | -23.83 | 1.13 | 1.20 | 2.66 | 1.04 | 0.94 |
| 2839 | -23.74 | 1.13 | 1.20 | 2.66 | 1.04 | 0.94 |
| 2840 | -23.67 | 1.12 | 1.19 | 2.65 | 1.04 | 0.94 |
| 2841 | -23.59 | 1.12 | 1.19 | 2.63 | 1.04 | 0.94 |
| 2842 | -23.52 | 1.12 | 1.18 | 2.59 | 1.04 | 0.94 |
| 2843 | -24.19 | 0.99 | 1.07 | 4.80 | 0.94 | 0.97 |
| 2844 | – | – | – | – | – | – |
| 2845 | – | – | – | – | – | – |
| 2846 | -24.23 | 1.00 | 1.08 | 4.66 | 0.95 | 0.97 |
| 2847 | -24.30 | 1.02 | 1.10 | 4.29 | 0.96 | 0.96 |
| 2848 | -24.28 | 1.05 | 1.13 | 3.86 | 0.98 | 0.95 |
| 2849 | -24.05 | 1.07 | 1.14 | 3.72 | 0.99 | 0.95 |
| 2850 | -23.98 | 1.07 | 1.14 | 3.72 | 1.00 | 0.95 |
| 2851 | -23.91 | 1.07 | 1.14 | 3.72 | 1.00 | 0.95 |
| 2852 | -23.83 | 1.08 | 1.14 | 3.73 | 1.00 | 0.95 |
| 2853 | -23.75 | 1.08 | 1.14 | 3.73 | 1.00 | 0.95 |
| 2854 | -23.68 | 1.08 | 1.14 | 3.74 | 1.00 | 0.95 |
| 2855 | -23.60 | 1.08 | 1.14 | 3.74 | 1.00 | 0.95 |
| 2856 | -23.52 | 1.08 | 1.14 | 3.74 | 1.00 | 0.95 |
| 2857 | -23.45 | 1.07 | 1.13 | 3.72 | 1.01 | 0.95 |
| 2858 | -23.38 | 1.07 | 1.13 | 3.69 | 1.00 | 0.95 |
| 2859 | -23.32 | 1.07 | 1.12 | 3.64 | 1.00 | 0.96 |
| 2860 | -24.30 | 0.95 | 1.02 | 5.33 | 0.92 | 0.99 |
| 2861 | – | – | – | – | – | – |
| 2862 | – | – | – | – | – | – |
| 2863 | -24.31 | 0.96 | 1.03 | 5.24 | 0.92 | 0.98 |
| 2864 | -24.32 | 0.98 | 1.05 | 4.98 | 0.93 | 0.98 |
| 2865 | -24.21 | 1.00 | 1.07 | 4.70 | 0.95 | 0.97 |
| 2866 | -23.93 | 1.02 | 1.09 | 4.64 | 0.96 | 0.96 |
| 2867 | -23.86 | 1.03 | 1.09 | 4.65 | 0.96 | 0.96 |
| 2868 | -23.79 | 1.03 | 1.09 | 4.66 | 0.97 | 0.96 |
| 2869 | -23.71 | 1.03 | 1.09 | 4.67 | 0.97 | 0.96 |
| 2870 | -23.63 | 1.03 | 1.09 | 4.68 | 0.97 | 0.96 |
| 2871 | -23.56 | 1.03 | 1.09 | 4.69 | 0.97 | 0.96 |
| 2872 | -23.48 | 1.03 | 1.08 | 4.69 | 0.97 | 0.96 |
| 2873 | -23.41 | 1.03 | 1.08 | 4.68 | 0.97 | 0.96 |
| 2874 | -23.35 | 1.03 | 1.08 | 4.66 | 0.97 | 0.97 |
| 2875 | -23.29 | 1.02 | 1.07 | 4.62 | 0.97 | 0.97 |

[Table 537]

EP 4 442 787 A1

| | | | | | | |
|---|---|---|---|---|---|---|
| 2876 | -23.24 | 1.02 | 1.07 | 4.56 | 0.97 | 0.97 |
| 2877 | -24.49 | 0.91 | 0.97 | 5.73 | 0.89 | 1.00 |
| 2878 | — | — | — | — | — | — |
| 2879 | -24.48 | 0.91 | 0.98 | 5.67 | 0.89 | 1.00 |
| 2880 | -24.43 | 0.93 | 1.00 | 5.53 | 0.90 | 0.99 |
| 2881 | -24.24 | 0.96 | 1.02 | 5.40 | 0.92 | 0.98 |
| 2882 | -23.92 | 0.98 | 1.03 | 5.43 | 0.93 | 0.97 |
| 2883 | -23.85 | 0.98 | 1.03 | 5.44 | 0.93 | 0.97 |
| 2884 | -23.78 | 0.98 | 1.04 | 5.46 | 0.94 | 0.97 |
| 2885 | -23.70 | 0.98 | 1.04 | 5.48 | 0.94 | 0.97 |
| 2886 | -23.63 | 0.98 | 1.03 | 5.49 | 0.94 | 0.97 |
| 2887 | -23.55 | 0.98 | 1.03 | 5.50 | 0.94 | 0.97 |
| 2888 | -23.48 | 0.98 | 1.03 | 5.50 | 0.94 | 0.98 |
| 2889 | -23.42 | 0.98 | 1.03 | 5.49 | 0.94 | 0.98 |
| 2890 | -23.36 | 0.98 | 1.02 | 5.46 | 0.94 | 0.98 |
| 2891 | -23.31 | 0.98 | 1.02 | 5.42 | 0.94 | 0.98 |
| 2892 | -23.27 | 0.97 | 1.01 | 5.36 | 0.94 | 0.98 |
| 2893 | -24.74 | 0.87 | 0.93 | 5.97 | 0.86 | 1.01 |
| 2894 | — | — | — | — | — | — |
| 2895 | -24.71 | 0.88 | 0.94 | 5.95 | 0.87 | 1.01 |
| 2896 | -24.63 | 0.89 | 0.95 | 5.93 | 0.87 | 1.00 |
| 2897 | -24.37 | 0.92 | 0.97 | 5.95 | 0.89 | 0.99 |
| 2898 | -24.02 | 0.93 | 0.98 | 6.07 | 0.90 | 0.99 |
| 2899 | -23.94 | 0.94 | 0.98 | 6.10 | 0.90 | 0.99 |
| 2900 | -23.87 | 0.94 | 0.98 | 6.13 | 0.91 | 0.99 |
| 2901 | -23.79 | 0.94 | 0.98 | 6.15 | 0.91 | 0.99 |
| 2902 | -23.72 | 0.94 | 0.98 | 6.17 | 0.91 | 0.99 |
| 2903 | -23.65 | 0.94 | 0.98 | 6.18 | 0.91 | 0.99 |
| 2904 | -23.58 | 0.94 | 0.98 | 6.18 | 0.91 | 0.99 |
| 2905 | -23.52 | 0.94 | 0.98 | 6.17 | 0.91 | 0.99 |
| 2906 | -23.47 | 0.94 | 0.97 | 6.14 | 0.91 | 0.99 |
| 2907 | -23.43 | 0.93 | 0.97 | 6.09 | 0.91 | 0.99 |
| 2908 | -23.40 | 0.93 | 0.96 | 6.02 | 0.91 | 0.99 |
| 2909 | -25.09 | 0.83 | 0.89 | 6.12 | 0.83 | 1.02 |
| 2910 | — | — | — | — | — | — |
| 2911 | — | — | — | — | — | — |
| 2912 | -25.04 | 0.84 | 0.89 | 6.14 | 0.84 | 1.02 |
| 2913 | -24.93 | 0.85 | 0.90 | 6.20 | 0.84 | 1.01 |
| 2914 | -24.60 | 0.87 | 0.92 | 6.36 | 0.86 | 1.01 |
| 2915 | -24.22 | 0.89 | 0.93 | 6.58 | 0.87 | 1.00 |
| 2916 | -24.14 | 0.89 | 0.93 | 6.62 | 0.87 | 1.00 |
| 2917 | -24.06 | 0.89 | 0.94 | 6.66 | 0.88 | 1.00 |
| 2918 | -23.98 | 0.89 | 0.94 | 6.69 | 0.88 | 1.00 |
| 2919 | -23.91 | 0.90 | 0.93 | 6.72 | 0.88 | 1.00 |
| 2920 | -23.84 | 0.90 | 0.93 | 6.73 | 0.88 | 1.00 |
| 2921 | -23.78 | 0.89 | 0.93 | 6.73 | 0.88 | 1.00 |
| 2922 | -23.73 | 0.89 | 0.93 | 6.72 | 0.88 | 1.00 |
| 2923 | -23.68 | 0.89 | 0.92 | 6.69 | 0.88 | 1.00 |
| 2924 | -23.65 | 0.89 | 0.92 | 6.63 | 0.88 | 1.00 |
| 2925 | -23.63 | 0.89 | 0.91 | 6.55 | 0.88 | 1.00 |

[Table 538]

571

| | | | | | | |
|---|---|---|---|---|---|---|
| 2926 | -25.53 | 0.80 | 0.84 | 6.12 | 0.80 | 1.03 |
| 2927 | — | — | — | — | — | — |
| 2928 | — | — | — | — | — | — |
| 2929 | -25.46 | 0.80 | 0.85 | 6.18 | 0.81 | 1.03 |
| 2930 | -25.32 | 0.81 | 0.86 | 6.31 | 0.81 | 1.03 |
| 2931 | -24.92 | 0.83 | 0.88 | 6.63 | 0.83 | 1.02 |
| 2932 | -24.51 | 0.85 | 0.89 | 6.94 | 0.84 | 1.01 |
| 2933 | -24.43 | 0.85 | 0.89 | 7.00 | 0.84 | 1.01 |
| 2934 | -24.35 | 0.85 | 0.89 | 7.05 | 0.85 | 1.01 |
| 2935 | -24.27 | 0.85 | 0.89 | 7.09 | 0.85 | 1.01 |
| 2936 | -24.20 | 0.85 | 0.89 | 7.12 | 0.85 | 1.01 |
| 2937 | -24.13 | 0.85 | 0.89 | 7.14 | 0.85 | 1.01 |
| 2938 | -24.07 | 0.85 | 0.88 | 7.15 | 0.85 | 1.01 |
| 2939 | -24.02 | 0.85 | 0.88 | 7.13 | 0.85 | 1.01 |
| 2940 | -23.98 | 0.85 | 0.88 | 7.10 | 0.85 | 1.02 |
| 2941 | -23.95 | 0.85 | 0.87 | 7.04 | 0.85 | 1.02 |
| 2942 | -23.94 | 0.84 | 0.87 | 6.96 | 0.84 | 1.02 |
| 2943 | -26.06 | 0.76 | 0.80 | 5.97 | 0.77 | 1.04 |
| 2944 | — | — | — | — | — | — |
| 2945 | — | — | — | — | — | — |
| 2946 | -25.98 | 0.76 | 0.80 | 6.07 | 0.78 | 1.04 |
| 2947 | -25.80 | 0.77 | 0.81 | 6.27 | 0.78 | 1.04 |
| 2948 | -25.34 | 0.79 | 0.83 | 6.71 | 0.80 | 1.03 |
| 2949 | -24.89 | 0.81 | 0.84 | 7.16 | 0.81 | 1.03 |
| 2950 | -24.81 | 0.81 | 0.84 | 7.23 | 0.81 | 1.02 |
| 2951 | -24.72 | 0.81 | 0.84 | 7.29 | 0.82 | 1.02 |
| 2952 | -24.64 | 0.81 | 0.84 | 7.34 | 0.82 | 1.03 |
| 2953 | -24.57 | 0.81 | 0.84 | 7.38 | 0.82 | 1.03 |
| 2954 | -24.51 | 0.81 | 0.84 | 7.41 | 0.82 | 1.03 |
| 2955 | -24.45 | 0.81 | 0.84 | 7.42 | 0.82 | 1.03 |
| 2956 | -24.41 | 0.81 | 0.84 | 7.41 | 0.82 | 1.03 |
| 2957 | -24.37 | 0.81 | 0.83 | 7.37 | 0.82 | 1.03 |
| 2958 | -24.35 | 0.81 | 0.83 | 7.31 | 0.81 | 1.03 |
| 2959 | -24.34 | 0.80 | 0.82 | 7.22 | 0.81 | 1.03 |
| 2960 | -26.70 | 0.72 | 0.76 | 5.66 | 0.74 | 1.05 |
| 2961 | — | — | — | — | — | — |
| 2962 | — | — | — | — | — | — |
| 2963 | -26.59 | 0.73 | 0.76 | 5.80 | 0.74 | 1.05 |
| 2964 | -26.38 | 0.73 | 0.77 | 6.07 | 0.75 | 1.05 |
| 2965 | -25.85 | 0.75 | 0.79 | 6.70 | 0.77 | 1.04 |
| 2966 | -25.37 | 0.77 | 0.80 | 7.23 | 0.78 | 1.04 |
| 2967 | -25.28 | 0.77 | 0.80 | 7.31 | 0.78 | 1.04 |
| 2968 | -25.19 | 0.77 | 0.80 | 7.39 | 0.78 | 1.04 |
| 2969 | -25.11 | 0.77 | 0.80 | 7.45 | 0.79 | 1.04 |
| 2970 | -25.04 | 0.77 | 0.80 | 7.50 | 0.79 | 1.04 |
| 2971 | -24.97 | 0.77 | 0.80 | 7.54 | 0.79 | 1.04 |
| 2972 | -24.92 | 0.77 | 0.79 | 7.55 | 0.79 | 1.04 |
| 2973 | -24.88 | 0.77 | 0.79 | 7.54 | 0.79 | 1.04 |
| 2974 | -24.85 | 0.77 | 0.79 | 7.51 | 0.78 | 1.04 |
| 2975 | -24.83 | 0.77 | 0.78 | 7.45 | 0.78 | 1.04 |

[Table 539]

| | | | | | |
|------|--------|------|------|------|------|------|
| 2976 | -24.83 | 0.76 | 0.78 | 7.35 | 0.78 | 1.04 |
| 2977 | -27.43 | 0.68 | 0.72 | 5.20 | 0.71 | 1.05 |
| 2978 | – | – | – | – | – | – |
| 2979 | – | – | – | – | – | – |
| 2980 | -27.30 | 0.69 | 0.72 | 5.37 | 0.71 | 1.05 |
| 2981 | -27.06 | 0.70 | 0.73 | 5.72 | 0.72 | 1.05 |
| 2982 | -26.47 | 0.72 | 0.75 | 6.50 | 0.74 | 1.05 |
| 2983 | -25.93 | 0.73 | 0.76 | 7.14 | 0.75 | 1.05 |
| 2984 | -25.84 | 0.73 | 0.76 | 7.25 | 0.75 | 1.05 |
| 2985 | -25.75 | 0.73 | 0.76 | 7.34 | 0.75 | 1.05 |
| 2986 | -25.67 | 0.73 | 0.76 | 7.41 | 0.75 | 1.05 |
| 2987 | -25.60 | 0.73 | 0.76 | 7.47 | 0.75 | 1.05 |
| 2988 | -25.53 | 0.73 | 0.75 | 7.52 | 0.76 | 1.05 |
| 2989 | -25.48 | 0.73 | 0.75 | 7.54 | 0.75 | 1.05 |
| 2990 | -25.44 | 0.73 | 0.75 | 7.53 | 0.75 | 1.05 |
| 2991 | -25.41 | 0.73 | 0.75 | 7.50 | 0.75 | 1.05 |
| 2992 | -25.40 | 0.73 | 0.74 | 7.44 | 0.75 | 1.05 |
| 2993 | -25.41 | 0.72 | 0.74 | 7.34 | 0.75 | 1.05 |
| 2994 | -28.27 | 0.65 | 0.67 | 4.57 | 0.67 | 1.06 |
| 2995 | – | – | – | – | – | – |
| 2996 | – | – | – | – | – | – |
| 2997 | -28.13 | 0.65 | 0.68 | 4.78 | 0.68 | 1.06 |
| 2998 | -27.85 | 0.66 | 0.69 | 5.20 | 0.68 | 1.06 |
| 2999 | -27.18 | 0.68 | 0.70 | 6.13 | 0.70 | 1.06 |
| 3000 | -26.60 | 0.69 | 0.71 | 6.90 | 0.72 | 1.06 |
| 3001 | -26.50 | 0.69 | 0.71 | 7.02 | 0.72 | 1.06 |
| 3002 | -26.41 | 0.69 | 0.71 | 7.13 | 0.72 | 1.06 |
| 3003 | -26.32 | 0.70 | 0.71 | 7.22 | 0.72 | 1.06 |
| 3004 | -26.25 | 0.70 | 0.71 | 7.29 | 0.72 | 1.06 |
| 3005 | -26.18 | 0.70 | 0.71 | 7.34 | 0.72 | 1.06 |
| 3006 | -26.13 | 0.69 | 0.71 | 7.37 | 0.72 | 1.06 |
| 3007 | -26.09 | 0.69 | 0.71 | 7.37 | 0.72 | 1.06 |
| 3008 | -26.07 | 0.69 | 0.71 | 7.34 | 0.72 | 1.06 |
| 3009 | -26.06 | 0.69 | 0.70 | 7.28 | 0.72 | 1.06 |
| 3010 | -26.08 | 0.69 | 0.70 | 7.18 | 0.72 | 1.06 |
| 3011 | -29.25 | 0.61 | 0.63 | 3.79 | 0.63 | 1.06 |
| 3012 | – | – | – | – | – | – |
| 3013 | – | – | – | – | – | – |
| 3014 | -29.08 | 0.62 | 0.64 | 4.03 | 0.64 | 1.06 |
| 3015 | -28.75 | 0.62 | 0.65 | 4.51 | 0.65 | 1.06 |
| 3016 | -28.01 | 0.64 | 0.66 | 5.60 | 0.67 | 1.06 |
| 3017 | -27.37 | 0.65 | 0.67 | 6.49 | 0.68 | 1.06 |
| 3018 | -27.27 | 0.66 | 0.67 | 6.63 | 0.69 | 1.06 |
| 3019 | -27.17 | 0.66 | 0.67 | 6.75 | 0.69 | 1.06 |
| 3020 | -27.08 | 0.66 | 0.67 | 6.86 | 0.69 | 1.07 |
| 3021 | -27.00 | 0.66 | 0.67 | 6.94 | 0.69 | 1.07 |
| 3022 | -26.93 | 0.66 | 0.67 | 7.01 | 0.69 | 1.07 |
| 3023 | -26.88 | 0.66 | 0.67 | 7.04 | 0.69 | 1.07 |
| 3024 | -26.84 | 0.66 | 0.67 | 7.05 | 0.69 | 1.07 |
| 3025 | -26.82 | 0.65 | 0.66 | 7.03 | 0.69 | 1.07 |

[Table 540]

| 3026 | -26.82 | 0.65 | 0.66 | 6.96 | 0.69 | 1.07 |
|------|--------|------|------|------|------|------|
| 3027 | -26.84 | 0.65 | 0.66 | 6.86 | 0.68 | 1.07 |
| 3028 | -30.36 | 0.58 | 0.59 | 2.85 | 0.59 | 1.05 |
| 3029 | – | – | – | – | – | – |
| 3030 | – | – | – | – | – | – |
| 3031 | -30.16 | 0.58 | 0.59 | 3.12 | 0.60 | 1.05 |
| 3032 | -29.79 | 0.59 | 0.60 | 3.66 | 0.61 | 1.06 |
| 3033 | -28.95 | 0.61 | 0.62 | 4.90 | 0.63 | 1.06 |
| 3034 | -28.26 | 0.62 | 0.63 | 5.91 | 0.65 | 1.07 |
| 3035 | -28.14 | 0.62 | 0.63 | 6.07 | 0.65 | 1.07 |
| 3036 | -28.04 | 0.62 | 0.63 | 6.21 | 0.65 | 1.07 |
| 3037 | -27.94 | 0.62 | 0.63 | 6.33 | 0.65 | 1.07 |
| 3038 | -27.86 | 0.62 | 0.63 | 6.43 | 0.65 | 1.07 |
| 3039 | -27.78 | 0.62 | 0.63 | 6.50 | 0.66 | 1.07 |
| 3040 | -27.73 | 0.62 | 0.63 | 6.55 | 0.66 | 1.07 |
| 3041 | -27.69 | 0.62 | 0.63 | 6.57 | 0.65 | 1.08 |
| 3042 | -27.67 | 0.62 | 0.63 | 6.55 | 0.65 | 1.08 |
| 3043 | -27.67 | 0.62 | 0.62 | 6.49 | 0.65 | 1.08 |
| 3044 | -27.70 | 0.61 | 0.62 | 6.39 | 0.65 | 1.08 |
| 3045 | -31.63 | 0.54 | 0.55 | 1.77 | 0.55 | 1.04 |
| 3046 | – | – | – | – | – | – |
| 3047 | – | – | – | – | – | – |
| 3048 | -31.41 | 0.54 | 0.55 | 2.07 | 0.56 | 1.05 |
| 3049 | -30.99 | 0.55 | 0.56 | 2.66 | 0.57 | 1.05 |
| 3050 | -30.04 | 0.57 | 0.58 | 4.03 | 0.59 | 1.06 |
| 3051 | -29.26 | 0.58 | 0.59 | 5.15 | 0.61 | 1.07 |
| 3052 | -29.14 | 0.58 | 0.59 | 5.33 | 0.61 | 1.07 |
| 3053 | -29.02 | 0.59 | 0.59 | 5.49 | 0.62 | 1.07 |
| 3054 | -28.92 | 0.59 | 0.59 | 5.63 | 0.62 | 1.07 |
| 3055 | -28.83 | 0.59 | 0.59 | 5.74 | 0.62 | 1.08 |
| 3056 | -28.75 | 0.59 | 0.59 | 5.83 | 0.62 | 1.08 |
| 3057 | -28.69 | 0.59 | 0.59 | 5.89 | 0.62 | 1.08 |
| 3058 | -28.65 | 0.58 | 0.59 | 5.91 | 0.62 | 1.08 |
| 3059 | -28.63 | 0.58 | 0.59 | 5.90 | 0.62 | 1.08 |
| 3060 | -28.64 | 0.58 | 0.58 | 5.84 | 0.62 | 1.08 |
| 3061 | -28.67 | 0.58 | 0.58 | 5.74 | 0.61 | 1.08 |
| 3062 | -24.00 | 0.99 | 1.07 | 4.96 | 0.94 | 0.97 |
| 3063 | – | – | – | – | – | – |
| 3064 | – | – | – | – | – | – |
| 3065 | -24.03 | 1.00 | 1.07 | 4.83 | 0.95 | 0.97 |
| 3066 | -24.07 | 1.02 | 1.09 | 4.49 | 0.96 | 0.96 |
| 3067 | -24.01 | 1.05 | 1.12 | 4.12 | 0.98 | 0.95 |
| 3068 | -23.73 | 1.07 | 1.14 | 4.03 | 0.99 | 0.95 |
| 3069 | -23.65 | 1.07 | 1.14 | 4.03 | 0.99 | 0.95 |
| 3070 | -23.57 | 1.07 | 1.14 | 4.04 | 1.00 | 0.95 |
| 3071 | -23.48 | 1.07 | 1.14 | 4.06 | 1.00 | 0.95 |
| 3072 | -23.40 | 1.07 | 1.14 | 4.07 | 1.00 | 0.95 |
| 3073 | -23.31 | 1.07 | 1.14 | 4.09 | 1.00 | 0.95 |
| 3074 | -23.23 | 1.07 | 1.14 | 4.09 | 1.00 | 0.95 |
| 3075 | -23.15 | 1.07 | 1.13 | 4.09 | 1.00 | 0.95 |

[Table 541]

574

| 3076 | -23.07 | 1.07 | 1.13 | 4.08 | 1.00 | 0.95 |
| 3077 | -23.00 | 1.07 | 1.12 | 4.05 | 1.00 | 0.95 |
| 3078 | -22.94 | 1.07 | 1.12 | 4.01 | 1.00 | 0.96 |
| 3079 | -24.10 | 0.95 | 1.02 | 5.51 | 0.92 | 0.99 |
| 3080 | — | — | — | — | — | — |
| 3081 | — | — | — | — | — | — |
| 3082 | -24.10 | 0.95 | 1.02 | 5.42 | 0.92 | 0.98 |
| 3083 | -24.08 | 0.97 | 1.04 | 5.20 | 0.93 | 0.98 |
| 3084 | -23.92 | 1.00 | 1.07 | 4.98 | 0.95 | 0.97 |
| 3085 | -23.60 | 1.02 | 1.08 | 4.97 | 0.96 | 0.96 |
| 3086 | -23.52 | 1.02 | 1.08 | 4.99 | 0.96 | 0.96 |
| 3087 | -23.44 | 1.02 | 1.08 | 5.01 | 0.97 | 0.96 |
| 3088 | -23.36 | 1.03 | 1.08 | 5.02 | 0.97 | 0.96 |
| 3089 | -23.27 | 1.03 | 1.08 | 5.04 | 0.97 | 0.96 |
| 3090 | -23.19 | 1.03 | 1.08 | 5.05 | 0.97 | 0.96 |
| 3091 | -23.11 | 1.03 | 1.08 | 5.06 | 0.97 | 0.96 |
| 3092 | -23.04 | 1.03 | 1.08 | 5.06 | 0.97 | 0.96 |
| 3093 | -22.97 | 1.02 | 1.07 | 5.04 | 0.97 | 0.97 |
| 3094 | -22.91 | 1.02 | 1.07 | 5.01 | 0.97 | 0.97 |
| 3095 | -22.85 | 1.02 | 1.06 | 4.95 | 0.97 | 0.97 |
| 3096 | -24.29 | 0.91 | 0.97 | 5.91 | 0.89 | 1.00 |
| 3097 | — | — | — | — | — | — |
| 3098 | — | — | — | — | — | — |
| 3099 | -24.27 | 0.91 | 0.97 | 5.87 | 0.89 | 1.00 |
| 3100 | -24.18 | 0.93 | 0.99 | 5.76 | 0.90 | 0.99 |
| 3101 | -23.94 | 0.96 | 1.01 | 5.69 | 0.92 | 0.98 |
| 3102 | -23.59 | 0.97 | 1.03 | 5.77 | 0.93 | 0.97 |
| 3103 | -23.51 | 0.98 | 1.03 | 5.80 | 0.93 | 0.97 |
| 3104 | -23.42 | 0.98 | 1.03 | 5.82 | 0.94 | 0.97 |
| 3105 | -23.34 | 0.98 | 1.03 | 5.85 | 0.94 | 0.97 |
| 3106 | -23.26 | 0.98 | 1.03 | 5.87 | 0.94 | 0.97 |
| 3107 | -23.18 | 0.98 | 1.03 | 5.88 | 0.94 | 0.97 |
| 3108 | -23.11 | 0.98 | 1.02 | 5.89 | 0.94 | 0.98 |
| 3109 | -23.04 | 0.98 | 1.02 | 5.88 | 0.94 | 0.98 |
| 3110 | -22.98 | 0.98 | 1.02 | 5.86 | 0.94 | 0.98 |
| 3111 | -22.92 | 0.97 | 1.01 | 5.82 | 0.94 | 0.98 |
| 3112 | -22.88 | 0.97 | 1.01 | 5.76 | 0.94 | 0.98 |
| 3113 | -24.56 | 0.87 | 0.92 | 6.18 | 0.86 | 1.01 |
| 3114 | — | — | — | — | — | — |
| 3115 | -24.53 | 0.87 | 0.93 | 6.17 | 0.86 | 1.01 |
| 3116 | -24.38 | 0.89 | 0.94 | 6.17 | 0.87 | 1.00 |
| 3117 | -24.08 | 0.91 | 0.97 | 6.25 | 0.89 | 0.99 |
| 3118 | -23.69 | 0.93 | 0.98 | 6.42 | 0.90 | 0.99 |
| 3119 | -23.60 | 0.93 | 0.98 | 6.46 | 0.90 | 0.99 |
| 3120 | -23.52 | 0.93 | 0.98 | 6.50 | 0.90 | 0.99 |
| 3121 | -23.44 | 0.94 | 0.98 | 6.53 | 0.91 | 0.99 |
| 3122 | -23.36 | 0.94 | 0.98 | 6.56 | 0.91 | 0.99 |
| 3123 | -23.28 | 0.94 | 0.98 | 6.57 | 0.91 | 0.99 |
| 3124 | -23.21 | 0.94 | 0.97 | 6.58 | 0.91 | 0.99 |
| 3125 | -23.15 | 0.93 | 0.97 | 6.57 | 0.91 | 0.99 |

[Table 542]

| 3126 | -23.09 | 0.93 | 0.97 | 6.55 | 0.91 | 0.99 |
|------|--------|------|------|------|------|------|
| 3127 | -23.05 | 0.93 | 0.96 | 6.50 | 0.91 | 0.99 |
| 3128 | -23.01 | 0.93 | 0.96 | 6.43 | 0.91 | 0.99 |
| 3129 | -24.87 | 0.83 | 0.88 | 6.33 | 0.83 | 1.02 |
| 3130 | – | – | – | – | – | – |
| 3131 | -24.81 | 0.84 | 0.89 | 6.36 | 0.84 | 1.02 |
| 3132 | -24.68 | 0.85 | 0.90 | 6.44 | 0.84 | 1.02 |
| 3133 | -24.31 | 0.87 | 0.92 | 6.66 | 0.86 | 1.01 |
| 3134 | -23.88 | 0.89 | 0.93 | 6.93 | 0.87 | 1.00 |
| 3135 | -23.80 | 0.89 | 0.93 | 6.98 | 0.87 | 1.00 |
| 3136 | -23.71 | 0.89 | 0.93 | 7.03 | 0.87 | 1.00 |
| 3137 | -23.63 | 0.89 | 0.93 | 7.07 | 0.88 | 1.00 |
| 3138 | -23.55 | 0.89 | 0.93 | 7.10 | 0.88 | 1.00 |
| 3139 | -23.48 | 0.89 | 0.93 | 7.13 | 0.88 | 1.00 |
| 3140 | -23.41 | 0.89 | 0.93 | 7.13 | 0.88 | 1.00 |
| 3141 | -23.35 | 0.89 | 0.92 | 7.13 | 0.88 | 1.00 |
| 3142 | -23.30 | 0.89 | 0.92 | 7.10 | 0.88 | 1.00 |
| 3143 | -23.27 | 0.89 | 0.91 | 7.05 | 0.88 | 1.01 |
| 3144 | -23.24 | 0.88 | 0.91 | 6.97 | 0.87 | 1.01 |
| 3145 | -25.31 | 0.79 | 0.84 | 6.33 | 0.80 | 1.03 |
| 3146 | – | – | – | – | – | – |
| 3147 | – | – | – | – | – | – |
| 3148 | -25.23 | 0.80 | 0.84 | 6.41 | 0.81 | 1.03 |
| 3149 | -25.07 | 0.81 | 0.85 | 6.55 | 0.81 | 1.03 |
| 3150 | -24.64 | 0.83 | 0.87 | 6.93 | 0.83 | 1.02 |
| 3151 | -24.18 | 0.85 | 0.88 | 7.30 | 0.84 | 1.01 |
| 3152 | -24.09 | 0.85 | 0.88 | 7.36 | 0.84 | 1.01 |
| 3153 | -24.01 | 0.85 | 0.88 | 7.42 | 0.84 | 1.01 |
| 3154 | -23.92 | 0.85 | 0.88 | 7.47 | 0.85 | 1.01 |
| 3155 | -23.84 | 0.85 | 0.88 | 7.51 | 0.85 | 1.01 |
| 3156 | -23.77 | 0.85 | 0.88 | 7.54 | 0.85 | 1.01 |
| 3157 | -23.71 | 0.85 | 0.88 | 7.55 | 0.85 | 1.02 |
| 3158 | -23.65 | 0.85 | 0.88 | 7.54 | 0.85 | 1.02 |
| 3159 | -23.61 | 0.85 | 0.87 | 7.51 | 0.85 | 1.02 |
| 3160 | -23.58 | 0.84 | 0.87 | 7.45 | 0.84 | 1.02 |
| 3161 | -23.56 | 0.84 | 0.86 | 7.37 | 0.84 | 1.02 |
| 3162 | -25.85 | 0.76 | 0.80 | 6.18 | 0.77 | 1.04 |
| 3163 | – | – | – | – | – | – |
| 3164 | – | – | – | – | – | – |
| 3165 | -25.75 | 0.76 | 0.80 | 6.29 | 0.78 | 1.04 |
| 3166 | -25.55 | 0.77 | 0.81 | 6.51 | 0.78 | 1.04 |
| 3167 | -25.06 | 0.79 | 0.83 | 7.04 | 0.80 | 1.03 |
| 3168 | -24.57 | 0.81 | 0.84 | 7.51 | 0.81 | 1.03 |
| 3169 | -24.48 | 0.81 | 0.84 | 7.59 | 0.81 | 1.03 |
| 3170 | -24.39 | 0.81 | 0.84 | 7.66 | 0.81 | 1.03 |
| 3171 | -24.31 | 0.81 | 0.84 | 7.72 | 0.82 | 1.03 |
| 3172 | -24.23 | 0.81 | 0.84 | 7.77 | 0.82 | 1.03 |
| 3173 | -24.16 | 0.81 | 0.84 | 7.80 | 0.82 | 1.03 |
| 3174 | -24.10 | 0.81 | 0.83 | 7.82 | 0.82 | 1.03 |
| 3175 | -24.05 | 0.81 | 0.83 | 7.81 | 0.82 | 1.03 |

[Table 543]

| 3176 | -24.01 | 0.81 | 0.83 | 7.78 | 0.82 | 1.03 |
|------|--------|------|------|------|------|------|
| 3177 | -23.98 | 0.80 | 0.82 | 7.72 | 0.81 | 1.03 |
| 3178 | -23.97 | 0.80 | 0.82 | 7.64 | 0.81 | 1.03 |
| 3179 | -26.48 | 0.72 | 0.75 | 5.87 | 0.74 | 1.05 |
| 3180 | – | – | – | – | – | – |
| 3181 | – | – | – | – | – | – |
| 3182 | -26.36 | 0.72 | 0.76 | 6.02 | 0.74 | 1.05 |
| 3183 | -26.13 | 0.73 | 0.77 | 6.31 | 0.75 | 1.05 |
| 3184 | -25.58 | 0.75 | 0.78 | 6.99 | 0.77 | 1.04 |
| 3185 | -25.05 | 0.77 | 0.79 | 7.58 | 0.78 | 1.04 |
| 3186 | -24.95 | 0.77 | 0.79 | 7.67 | 0.78 | 1.04 |
| 3187 | -24.86 | 0.77 | 0.79 | 7.75 | 0.78 | 1.04 |
| 3188 | -24.78 | 0.77 | 0.79 | 7.83 | 0.78 | 1.04 |
| 3189 | -24.70 | 0.77 | 0.79 | 7.88 | 0.78 | 1.04 |
| 3190 | -24.63 | 0.77 | 0.79 | 7.92 | 0.79 | 1.04 |
| 3191 | -24.57 | 0.77 | 0.79 | 7.94 | 0.79 | 1.04 |
| 3192 | -24.52 | 0.77 | 0.79 | 7.94 | 0.78 | 1.04 |
| 3193 | -24.49 | 0.77 | 0.78 | 7.91 | 0.78 | 1.04 |
| 3194 | -24.47 | 0.76 | 0.78 | 7.85 | 0.78 | 1.04 |
| 3195 | -24.47 | 0.76 | 0.77 | 7.76 | 0.78 | 1.04 |
| 3196 | -27.21 | 0.68 | 0.71 | 5.40 | 0.71 | 1.06 |
| 3197 | – | – | – | – | – | – |
| 3198 | – | – | – | – | – | – |
| 3199 | -27.08 | 0.69 | 0.72 | 5.59 | 0.71 | 1.06 |
| 3200 | -26.82 | 0.70 | 0.73 | 5.95 | 0.72 | 1.05 |
| 3201 | -26.19 | 0.71 | 0.74 | 6.79 | 0.74 | 1.05 |
| 3202 | -25.63 | 0.73 | 0.75 | 7.48 | 0.75 | 1.05 |
| 3203 | -25.53 | 0.73 | 0.75 | 7.59 | 0.75 | 1.05 |
| 3204 | -25.43 | 0.73 | 0.75 | 7.69 | 0.75 | 1.05 |
| 3205 | -25.35 | 0.73 | 0.75 | 7.78 | 0.75 | 1.05 |
| 3206 | -25.27 | 0.73 | 0.75 | 7.84 | 0.75 | 1.05 |
| 3207 | -25.20 | 0.73 | 0.75 | 7.89 | 0.75 | 1.05 |
| 3208 | -25.14 | 0.73 | 0.75 | 7.92 | 0.75 | 1.05 |
| 3209 | -25.10 | 0.73 | 0.74 | 7.92 | 0.75 | 1.05 |
| 3210 | -25.07 | 0.73 | 0.74 | 7.89 | 0.75 | 1.05 |
| 3211 | -25.05 | 0.72 | 0.74 | 7.83 | 0.75 | 1.05 |
| 3212 | -25.06 | 0.72 | 0.73 | 7.73 | 0.75 | 1.05 |
| 3213 | -28.06 | 0.65 | 0.67 | 4.77 | 0.67 | 1.06 |
| 3214 | – | – | – | – | – | – |
| 3215 | – | – | – | – | – | – |
| 3216 | -27.91 | 0.65 | 0.68 | 4.99 | 0.68 | 1.06 |
| 3217 | -27.61 | 0.66 | 0.68 | 5.42 | 0.68 | 1.06 |
| 3218 | -26.91 | 0.68 | 0.70 | 6.41 | 0.70 | 1.06 |
| 3219 | -26.30 | 0.69 | 0.71 | 7.22 | 0.72 | 1.06 |
| 3220 | -26.20 | 0.69 | 0.71 | 7.35 | 0.72 | 1.06 |
| 3221 | -26.10 | 0.69 | 0.71 | 7.47 | 0.72 | 1.06 |
| 3222 | -26.01 | 0.69 | 0.71 | 7.56 | 0.72 | 1.06 |
| 3223 | -25.93 | 0.69 | 0.71 | 7.64 | 0.72 | 1.06 |
| 3224 | -25.86 | 0.69 | 0.71 | 7.70 | 0.72 | 1.06 |
| 3225 | -25.80 | 0.69 | 0.71 | 7.73 | 0.72 | 1.06 |

[Table 544]

| 3226 | -25.76 | 0.69 | 0.70 | 7.74 | 0.72 | 1.06 |
|------|--------|------|------|------|------|------|
| 3227 | -25.73 | 0.69 | 0.70 | 7.71 | 0.72 | 1.06 |
| 3228 | -25.73 | 0.69 | 0.70 | 7.65 | 0.72 | 1.06 |
| 3229 | -25.74 | 0.68 | 0.69 | 7.55 | 0.71 | 1.06 |
| 3230 | -29.04 | 0.61 | 0.63 | 3.97 | 0.63 | 1.06 |
| 3231 | – | – | – | – | – | – |
| 3232 | – | – | – | – | – | – |
| 3233 | -28.87 | 0.61 | 0.63 | 4.23 | 0.64 | 1.06 |
| 3234 | -28.53 | 0.62 | 0.64 | 4.72 | 0.65 | 1.06 |
| 3235 | -27.75 | 0.64 | 0.66 | 5.87 | 0.67 | 1.06 |
| 3236 | -27.09 | 0.65 | 0.67 | 6.80 | 0.68 | 1.07 |
| 3237 | -26.97 | 0.65 | 0.67 | 6.94 | 0.68 | 1.07 |
| 3238 | -26.87 | 0.65 | 0.67 | 7.08 | 0.69 | 1.07 |
| 3239 | -26.77 | 0.66 | 0.67 | 7.19 | 0.69 | 1.07 |
| 3240 | -26.69 | 0.66 | 0.67 | 7.28 | 0.69 | 1.07 |
| 3241 | -26.62 | 0.66 | 0.67 | 7.35 | 0.69 | 1.07 |
| 3242 | -26.56 | 0.65 | 0.67 | 7.39 | 0.69 | 1.07 |
| 3243 | -26.52 | 0.65 | 0.66 | 7.40 | 0.69 | 1.07 |
| 3244 | -26.50 | 0.65 | 0.66 | 7.38 | 0.69 | 1.07 |
| 3245 | -26.49 | 0.65 | 0.66 | 7.32 | 0.68 | 1.07 |
| 3246 | -26.52 | 0.65 | 0.65 | 7.21 | 0.68 | 1.07 |
| 3247 | -30.16 | 0.57 | 0.59 | 3.02 | 0.59 | 1.05 |
| 3248 | – | – | – | – | – | – |
| 3249 | – | – | – | – | – | – |
| 3250 | -29.96 | 0.58 | 0.59 | 3.30 | 0.60 | 1.06 |
| 3251 | -29.58 | 0.59 | 0.60 | 3.86 | 0.61 | 1.06 |
| 3252 | -28.70 | 0.60 | 0.62 | 5.15 | 0.63 | 1.06 |
| 3253 | -27.98 | 0.62 | 0.63 | 6.20 | 0.65 | 1.07 |
| 3254 | -27.86 | 0.62 | 0.63 | 6.36 | 0.65 | 1.07 |
| 3255 | -27.75 | 0.62 | 0.63 | 6.51 | 0.65 | 1.07 |
| 3256 | -27.65 | 0.62 | 0.63 | 6.64 | 0.65 | 1.07 |
| 3257 | -27.56 | 0.62 | 0.63 | 6.74 | 0.65 | 1.08 |
| 3258 | -27.49 | 0.62 | 0.63 | 6.82 | 0.65 | 1.08 |
| 3259 | -27.43 | 0.62 | 0.63 | 6.87 | 0.65 | 1.08 |
| 3260 | -27.39 | 0.62 | 0.62 | 6.89 | 0.65 | 1.08 |
| 3261 | -27.36 | 0.62 | 0.62 | 6.87 | 0.65 | 1.08 |
| 3262 | -27.37 | 0.61 | 0.62 | 6.81 | 0.65 | 1.08 |
| 3263 | -27.39 | 0.61 | 0.61 | 6.71 | 0.65 | 1.08 |
| 3264 | -31.44 | 0.54 | 0.54 | 1.93 | 0.55 | 1.04 |
| 3265 | – | – | – | – | – | – |
| 3266 | – | – | – | – | – | – |
| 3267 | -31.21 | 0.54 | 0.55 | 2.24 | 0.56 | 1.05 |
| 3268 | -30.78 | 0.55 | 0.56 | 2.85 | 0.57 | 1.05 |
| 3269 | -29.80 | 0.57 | 0.58 | 4.26 | 0.59 | 1.06 |
| 3270 | -29.00 | 0.58 | 0.59 | 5.42 | 0.61 | 1.07 |
| 3271 | -28.87 | 0.58 | 0.59 | 5.60 | 0.61 | 1.07 |
| 3272 | -28.75 | 0.58 | 0.59 | 5.77 | 0.62 | 1.08 |
| 3273 | -28.64 | 0.58 | 0.59 | 5.91 | 0.62 | 1.08 |
| 3274 | -28.55 | 0.58 | 0.59 | 6.03 | 0.62 | 1.08 |
| 3275 | -28.47 | 0.58 | 0.59 | 6.12 | 0.62 | 1.08 |

[Table 545]

| 3276 | -28.41 | 0.58 | 0.59 | 6.18 | 0.62 | 1.08 |
|------|--------|------|------|------|------|------|
| 3277 | -28.37 | 0.58 | 0.58 | 6.21 | 0.62 | 1.08 |
| 3278 | -28.34 | 0.58 | 0.58 | 6.19 | 0.62 | 1.08 |
| 3279 | -28.35 | 0.58 | 0.58 | 6.14 | 0.62 | 1.08 |
| 3280 | -28.38 | 0.57 | 0.57 | 6.04 | 0.61 | 1.08 |
| 3281 | -23.80 | 0.90 | 0.96 | 6.39 | 0.89 | 1.00 |
| 3282 | – | – | – | – | – | – |
| 3283 | – | – | – | – | – | – |
| 3284 | -23.75 | 0.91 | 0.97 | 6.37 | 0.89 | 1.00 |
| 3285 | -23.60 | 0.93 | 0.98 | 6.34 | 0.90 | 0.99 |
| 3286 | -23.25 | 0.95 | 1.00 | 6.41 | 0.92 | 0.98 |
| 3287 | -22.78 | 0.97 | 1.01 | 6.62 | 0.93 | 0.97 |
| 3288 | -22.68 | 0.97 | 1.02 | 6.67 | 0.93 | 0.97 |
| 3289 | -22.58 | 0.97 | 1.02 | 6.72 | 0.93 | 0.97 |
| 3290 | -22.49 | 0.97 | 1.01 | 6.76 | 0.93 | 0.97 |
| 3291 | -22.39 | 0.97 | 1.01 | 6.80 | 0.93 | 0.97 |
| 3292 | -22.30 | 0.97 | 1.01 | 6.83 | 0.93 | 0.98 |
| 3293 | -22.21 | 0.97 | 1.01 | 6.85 | 0.94 | 0.98 |
| 3294 | -22.13 | 0.97 | 1.01 | 6.86 | 0.94 | 0.98 |
| 3295 | -22.06 | 0.97 | 1.00 | 6.85 | 0.94 | 0.98 |
| 3296 | -21.99 | 0.97 | 1.00 | 6.82 | 0.93 | 0.98 |
| 3297 | -21.94 | 0.96 | 0.99 | 6.76 | 0.93 | 0.98 |
| 3298 | -24.07 | 0.86 | 0.92 | 6.66 | 0.86 | 1.01 |
| 3299 | – | – | – | – | – | – |
| 3300 | – | – | – | – | – | – |
| 3301 | -24.01 | 0.87 | 0.92 | 6.68 | 0.86 | 1.01 |
| 3302 | -23.81 | 0.89 | 0.94 | 6.76 | 0.87 | 1.00 |
| 3303 | -23.39 | 0.91 | 0.95 | 6.98 | 0.89 | 0.99 |
| 3304 | -22.90 | 0.92 | 0.96 | 7.28 | 0.90 | 0.99 |
| 3305 | -22.80 | 0.93 | 0.96 | 7.34 | 0.90 | 0.99 |
| 3306 | -22.70 | 0.93 | 0.96 | 7.40 | 0.90 | 0.99 |
| 3307 | -22.60 | 0.93 | 0.96 | 7.45 | 0.90 | 0.99 |
| 3308 | -22.51 | 0.93 | 0.96 | 7.49 | 0.90 | 0.99 |
| 3309 | -22.42 | 0.93 | 0.96 | 7.53 | 0.90 | 0.99 |
| 3310 | -22.33 | 0.93 | 0.96 | 7.55 | 0.90 | 0.99 |
| 3311 | -22.26 | 0.93 | 0.96 | 7.55 | 0.90 | 0.99 |
| 3312 | -22.19 | 0.92 | 0.95 | 7.54 | 0.90 | 0.99 |
| 3313 | -22.14 | 0.92 | 0.95 | 7.50 | 0.90 | 0.99 |
| 3314 | -22.09 | 0.92 | 0.94 | 7.44 | 0.90 | 0.99 |
| 3315 | -24.44 | 0.82 | 0.87 | 6.78 | 0.83 | 1.03 |
| 3316 | – | – | – | – | – | – |
| 3317 | – | – | – | – | – | – |
| 3318 | -24.36 | 0.83 | 0.88 | 6.84 | 0.83 | 1.02 |
| 3319 | -24.11 | 0.84 | 0.89 | 7.03 | 0.84 | 1.02 |
| 3320 | -23.63 | 0.87 | 0.91 | 7.40 | 0.86 | 1.01 |
| 3321 | -23.11 | 0.88 | 0.92 | 7.79 | 0.87 | 1.00 |
| 3322 | -23.01 | 0.88 | 0.92 | 7.86 | 0.87 | 1.00 |
| 3323 | -22.91 | 0.88 | 0.92 | 7.93 | 0.87 | 1.00 |
| 3324 | -22.81 | 0.88 | 0.92 | 7.99 | 0.87 | 1.00 |
| 3325 | -22.72 | 0.88 | 0.92 | 8.04 | 0.87 | 1.00 |

[Table 546]

| 3326 | -22.64 | 0.88 | 0.91 | 8.07 | 0.87 | 1.00 |
|------|--------|------|------|------|------|------|
| 3327 | -22.56 | 0.88 | 0.91 | 8.10 | 0.87 | 1.00 |
| 3328 | -22.49 | 0.88 | 0.91 | 8.10 | 0.87 | 1.01 |
| 3329 | -22.43 | 0.88 | 0.90 | 8.08 | 0.87 | 1.01 |
| 3330 | -22.38 | 0.88 | 0.90 | 8.04 | 0.87 | 1.01 |
| 3331 | -22.35 | 0.87 | 0.89 | 7.97 | 0.87 | 1.01 |
| 3332 | -24.90 | 0.78 | 0.83 | 6.74 | 0.80 | 1.04 |
| 3333 | — | — | — | — | — | — |
| 3334 | -24.80 | 0.79 | 0.83 | 6.84 | 0.80 | 1.03 |
| 3335 | -24.50 | 0.81 | 0.85 | 7.14 | 0.81 | 1.03 |
| 3336 | -23.97 | 0.83 | 0.86 | 7.65 | 0.83 | 1.02 |
| 3337 | -23.43 | 0.84 | 0.87 | 8.14 | 0.84 | 1.02 |
| 3338 | -23.32 | 0.84 | 0.87 | 8.23 | 0.84 | 1.02 |
| 3339 | -23.22 | 0.84 | 0.87 | 8.31 | 0.84 | 1.02 |
| 3340 | -23.13 | 0.84 | 0.87 | 8.38 | 0.84 | 1.02 |
| 3341 | -23.04 | 0.84 | 0.87 | 8.43 | 0.84 | 1.02 |
| 3342 | -22.95 | 0.84 | 0.87 | 8.47 | 0.84 | 1.02 |
| 3343 | -22.88 | 0.84 | 0.87 | 8.50 | 0.84 | 1.02 |
| 3344 | -22.81 | 0.84 | 0.86 | 8.50 | 0.84 | 1.02 |
| 3345 | -22.76 | 0.84 | 0.86 | 8.48 | 0.84 | 1.02 |
| 3346 | -22.72 | 0.84 | 0.85 | 8.43 | 0.84 | 1.02 |
| 3347 | -22.70 | 0.83 | 0.85 | 8.35 | 0.84 | 1.02 |
| 3348 | -25.34 | 0.75 | 0.79 | 6.68 | 0.77 | 1.04 |
| 3349 | — | — | — | — | — | — |
| 3350 | -25.23 | 0.76 | 0.79 | 6.82 | 0.77 | 1.04 |
| 3351 | -25.00 | 0.77 | 0.80 | 7.09 | 0.78 | 1.04 |
| 3352 | -24.41 | 0.79 | 0.82 | 7.75 | 0.80 | 1.03 |
| 3353 | -23.84 | 0.80 | 0.83 | 8.34 | 0.81 | 1.03 |
| 3354 | -23.73 | 0.80 | 0.83 | 8.44 | 0.81 | 1.03 |
| 3355 | -23.63 | 0.80 | 0.83 | 8.53 | 0.81 | 1.03 |
| 3356 | -23.54 | 0.80 | 0.83 | 8.61 | 0.81 | 1.03 |
| 3357 | -23.45 | 0.80 | 0.82 | 8.67 | 0.81 | 1.03 |
| 3358 | -23.36 | 0.80 | 0.82 | 8.72 | 0.81 | 1.03 |
| 3359 | -23.29 | 0.80 | 0.82 | 8.75 | 0.81 | 1.03 |
| 3360 | -23.23 | 0.80 | 0.82 | 8.75 | 0.81 | 1.03 |
| 3361 | -23.18 | 0.80 | 0.81 | 8.73 | 0.81 | 1.03 |
| 3362 | -23.15 | 0.79 | 0.81 | 8.68 | 0.81 | 1.03 |
| 3363 | -23.13 | 0.79 | 0.80 | 8.60 | 0.81 | 1.03 |
| 3364 | -25.98 | 0.71 | 0.75 | 6.36 | 0.74 | 1.05 |
| 3365 | — | — | — | — | — | — |
| 3366 | — | — | — | — | — | — |
| 3367 | -25.85 | 0.72 | 0.75 | 6.54 | 0.74 | 1.05 |
| 3368 | -25.59 | 0.73 | 0.76 | 6.88 | 0.75 | 1.05 |
| 3369 | -24.94 | 0.75 | 0.78 | 7.69 | 0.77 | 1.04 |
| 3370 | -24.34 | 0.76 | 0.78 | 8.38 | 0.78 | 1.04 |
| 3371 | -24.24 | 0.76 | 0.78 | 8.50 | 0.78 | 1.04 |
| 3372 | -24.13 | 0.76 | 0.78 | 8.60 | 0.78 | 1.04 |
| 3373 | -24.03 | 0.76 | 0.78 | 8.69 | 0.78 | 1.04 |
| 3374 | -23.95 | 0.76 | 0.78 | 8.76 | 0.78 | 1.04 |
| 3375 | -23.87 | 0.76 | 0.78 | 8.81 | 0.78 | 1.04 |

[Table 547]

| 3376 | -23.80 | 0.76 | 0.78 | 8.85 | 0.78 | 1.04 |
|------|--------|------|------|------|------|------|
| 3377 | -23.74 | 0.76 | 0.77 | 8.85 | 0.78 | 1.05 |
| 3378 | -23.70 | 0.76 | 0.77 | 8.83 | 0.78 | 1.05 |
| 3379 | -23.67 | 0.75 | 0.77 | 8.78 | 0.78 | 1.05 |
| 3380 | -23.66 | 0.75 | 0.76 | 8.69 | 0.78 | 1.05 |
| 3381 | -26.73 | 0.68 | 0.71 | 5.88 | 0.70 | 1.06 |
| 3382 | – | – | – | – | – | – |
| 3383 | – | – | – | – | – | – |
| 3384 | -26.58 | 0.68 | 0.71 | 6.09 | 0.71 | 1.06 |
| 3385 | -26.29 | 0.69 | 0.72 | 6.50 | 0.72 | 1.06 |
| 3386 | -25.58 | 0.71 | 0.73 | 7.45 | 0.73 | 1.05 |
| 3387 | -24.95 | 0.72 | 0.74 | 8.26 | 0.75 | 1.05 |
| 3388 | -24.83 | 0.72 | 0.74 | 8.39 | 0.75 | 1.05 |
| 3389 | -24.73 | 0.72 | 0.74 | 8.51 | 0.75 | 1.05 |
| 3390 | -24.63 | 0.72 | 0.74 | 8.61 | 0.75 | 1.05 |
| 3391 | -24.54 | 0.72 | 0.74 | 8.69 | 0.75 | 1.06 |
| 3392 | -24.46 | 0.72 | 0.74 | 8.75 | 0.75 | 1.06 |
| 3393 | -24.39 | 0.72 | 0.74 | 8.79 | 0.75 | 1.06 |
| 3394 | -24.34 | 0.72 | 0.73 | 8.79 | 0.75 | 1.06 |
| 3395 | -24.30 | 0.72 | 0.73 | 8.77 | 0.75 | 1.06 |
| 3396 | -24.28 | 0.72 | 0.72 | 8.72 | 0.75 | 1.06 |
| 3397 | -24.28 | 0.71 | 0.72 | 8.62 | 0.74 | 1.06 |
| 3398 | -27.60 | 0.64 | 0.66 | 5.22 | 0.67 | 1.06 |
| 3399 | – | – | – | – | – | – |
| 3400 | – | – | – | – | – | – |
| 3401 | -27.43 | 0.65 | 0.67 | 5.46 | 0.67 | 1.06 |
| 3402 | -27.10 | 0.65 | 0.68 | 5.94 | 0.68 | 1.06 |
| 3403 | -26.33 | 0.67 | 0.69 | 7.05 | 0.70 | 1.06 |
| 3404 | -25.65 | 0.68 | 0.70 | 7.97 | 0.71 | 1.06 |
| 3405 | -25.53 | 0.68 | 0.70 | 8.11 | 0.72 | 1.06 |
| 3406 | -25.42 | 0.69 | 0.70 | 8.24 | 0.72 | 1.06 |
| 3407 | -25.32 | 0.69 | 0.70 | 8.36 | 0.72 | 1.06 |
| 3408 | -25.23 | 0.69 | 0.70 | 8.45 | 0.72 | 1.07 |
| 3409 | -25.15 | 0.69 | 0.70 | 8.52 | 0.72 | 1.07 |
| 3410 | -25.09 | 0.68 | 0.69 | 8.56 | 0.72 | 1.07 |
| 3411 | -25.03 | 0.68 | 0.69 | 8.57 | 0.72 | 1.07 |
| 3412 | -25.00 | 0.68 | 0.69 | 8.55 | 0.72 | 1.07 |
| 3413 | -24.99 | 0.68 | 0.68 | 8.50 | 0.71 | 1.07 |
| 3414 | -25.00 | 0.67 | 0.68 | 8.40 | 0.71 | 1.07 |
| 3415 | -28.59 | 0.60 | 0.62 | 4.40 | 0.63 | 1.06 |
| 3416 | – | – | – | – | – | – |
| 3417 | – | – | – | – | – | – |
| 3418 | -28.40 | 0.61 | 0.63 | 4.67 | 0.64 | 1.06 |
| 3419 | -28.03 | 0.62 | 0.63 | 5.22 | 0.65 | 1.06 |
| 3420 | -27.18 | 0.63 | 0.65 | 6.47 | 0.67 | 1.07 |
| 3421 | -26.46 | 0.65 | 0.66 | 7.50 | 0.68 | 1.07 |
| 3422 | -26.33 | 0.65 | 0.66 | 7.66 | 0.68 | 1.07 |
| 3423 | -26.22 | 0.65 | 0.66 | 7.81 | 0.68 | 1.07 |
| 3424 | -26.11 | 0.65 | 0.66 | 7.94 | 0.68 | 1.07 |
| 3425 | -26.02 | 0.65 | 0.66 | 8.04 | 0.69 | 1.07 |

[Table 548]

| 3426 | -25.94 | 0.65 | 0.66 | 8.12 | 0.69 | 1.08 |
|------|--------|------|------|------|------|------|
| 3427 | -25.88 | 0.65 | 0.66 | 8.17 | 0.69 | 1.08 |
| 3428 | -25.83 | 0.65 | 0.65 | 8.19 | 0.69 | 1.08 |
| 3429 | -25.80 | 0.64 | 0.65 | 8.17 | 0.68 | 1.08 |
| 3430 | -25.79 | 0.64 | 0.64 | 8.11 | 0.68 | 1.08 |
| 3431 | -25.81 | 0.64 | 0.64 | 8.01 | 0.68 | 1.08 |
| 3432 | -29.73 | 0.57 | 0.58 | 3.41 | 0.59 | 1.06 |
| 3433 | – | – | – | – | – | – |
| 3434 | – | – | – | – | – | – |
| 3435 | -29.52 | 0.57 | 0.58 | 3.72 | 0.60 | 1.06 |
| 3436 | -29.10 | 0.58 | 0.59 | 4.32 | 0.61 | 1.06 |
| 3437 | -28.17 | 0.60 | 0.61 | 5.71 | 0.63 | 1.07 |
| 3438 | -27.38 | 0.61 | 0.62 | 6.85 | 0.64 | 1.08 |
| 3439 | -27.25 | 0.61 | 0.62 | 7.03 | 0.65 | 1.08 |
| 3440 | -27.13 | 0.61 | 0.62 | 7.19 | 0.65 | 1.08 |
| 3441 | -27.02 | 0.61 | 0.62 | 7.34 | 0.65 | 1.08 |
| 3442 | -26.92 | 0.61 | 0.62 | 7.45 | 0.65 | 1.08 |
| 3443 | -26.84 | 0.61 | 0.62 | 7.54 | 0.65 | 1.08 |
| 3444 | -26.78 | 0.61 | 0.62 | 7.60 | 0.65 | 1.08 |
| 3445 | -26.73 | 0.61 | 0.61 | 7.62 | 0.65 | 1.09 |
| 3446 | -26.70 | 0.61 | 0.61 | 7.60 | 0.65 | 1.09 |
| 3447 | -26.70 | 0.60 | 0.61 | 7.55 | 0.65 | 1.09 |
| 3448 | -26.72 | 0.60 | 0.60 | 7.44 | 0.64 | 1.09 |
| 3449 | -31.03 | 0.53 | 0.54 | 2.29 | 0.55 | 1.05 |
| 3450 | – | – | – | – | – | – |
| 3451 | – | – | – | – | – | – |
| 3452 | -30.79 | 0.54 | 0.54 | 2.62 | 0.55 | 1.05 |
| 3453 | -30.33 | 0.55 | 0.55 | 3.27 | 0.57 | 1.06 |
| 3454 | -29.29 | 0.56 | 0.57 | 4.78 | 0.59 | 1.07 |
| 3455 | -28.44 | 0.57 | 0.58 | 6.02 | 0.61 | 1.08 |
| 3456 | -28.29 | 0.57 | 0.58 | 6.22 | 0.61 | 1.08 |
| 3457 | -28.17 | 0.58 | 0.58 | 6.40 | 0.61 | 1.08 |
| 3458 | -28.05 | 0.58 | 0.58 | 6.55 | 0.61 | 1.08 |
| 3459 | -27.95 | 0.58 | 0.58 | 6.68 | 0.62 | 1.09 |
| 3460 | -27.86 | 0.58 | 0.58 | 6.77 | 0.62 | 1.09 |
| 3461 | -27.79 | 0.58 | 0.58 | 6.84 | 0.62 | 1.09 |
| 3462 | -27.74 | 0.57 | 0.57 | 6.87 | 0.62 | 1.09 |
| 3463 | -27.72 | 0.57 | 0.57 | 6.86 | 0.61 | 1.09 |
| 3464 | -27.72 | 0.57 | 0.57 | 6.80 | 0.61 | 1.09 |
| 3465 | -27.75 | 0.57 | 0.56 | 6.69 | 0.61 | 1.09 |
| 3466 | -23.85 | 0.82 | 0.86 | 7.39 | 0.83 | 1.03 |
| 3467 | – | – | – | – | – | – |
| 3468 | – | – | – | – | – | – |
| 3469 | -23.75 | 0.82 | 0.87 | 7.49 | 0.83 | 1.02 |
| 3470 | -23.42 | 0.84 | 0.88 | 7.78 | 0.84 | 1.02 |
| 3471 | -22.82 | 0.86 | 0.90 | 8.31 | 0.85 | 1.01 |
| 3472 | -22.20 | 0.87 | 0.90 | 8.84 | 0.86 | 1.00 |
| 3473 | -22.08 | 0.87 | 0.90 | 8.94 | 0.87 | 1.00 |
| 3474 | -21.96 | 0.88 | 0.90 | 9.03 | 0.87 | 1.00 |
| 3475 | -21.85 | 0.88 | 0.90 | 9.11 | 0.87 | 1.00 |

[Table 549]

| 3476 | -21.74 | 0.88 | 0.90 | 9.18 | 0.87 | 1.00 |
|------|--------|------|------|------|------|------|
| 3477 | -21.64 | 0.88 | 0.90 | 9.24 | 0.87 | 1.01 |
| 3478 | -21.55 | 0.88 | 0.90 | 9.27 | 0.87 | 1.01 |
| 3479 | -21.47 | 0.87 | 0.89 | 9.29 | 0.87 | 1.01 |
| 3480 | -21.40 | 0.87 | 0.89 | 9.28 | 0.87 | 1.01 |
| 3481 | -21.34 | 0.87 | 0.88 | 9.25 | 0.87 | 1.01 |
| 3482 | -21.30 | 0.86 | 0.88 | 9.18 | 0.86 | 1.01 |
| 3483 | -24.32 | 0.78 | 0.82 | 7.35 | 0.80 | 1.04 |
| 3484 | – | – | – | – | – | – |
| 3485 | – | – | – | – | – | – |
| 3486 | -24.20 | 0.79 | 0.82 | 7.48 | 0.80 | 1.04 |
| 3487 | -23.84 | 0.80 | 0.84 | 7.87 | 0.81 | 1.03 |
| 3488 | -23.19 | 0.82 | 0.85 | 8.54 | 0.82 | 1.02 |
| 3489 | -22.55 | 0.83 | 0.86 | 9.17 | 0.83 | 1.02 |
| 3490 | -22.43 | 0.83 | 0.86 | 9.28 | 0.84 | 1.02 |
| 3491 | -22.32 | 0.83 | 0.86 | 9.38 | 0.84 | 1.02 |
| 3492 | -22.20 | 0.83 | 0.86 | 9.47 | 0.84 | 1.02 |
| 3493 | -22.10 | 0.83 | 0.85 | 9.54 | 0.84 | 1.02 |
| 3494 | -22.00 | 0.83 | 0.85 | 9.60 | 0.84 | 1.02 |
| 3495 | -21.92 | 0.83 | 0.85 | 9.64 | 0.84 | 1.02 |
| 3496 | -21.84 | 0.83 | 0.85 | 9.66 | 0.84 | 1.02 |
| 3497 | -21.78 | 0.83 | 0.84 | 9.65 | 0.84 | 1.02 |
| 3498 | -21.73 | 0.83 | 0.84 | 9.61 | 0.84 | 1.02 |
| 3499 | -21.69 | 0.82 | 0.83 | 9.54 | 0.83 | 1.02 |
| 3500 | -24.89 | 0.74 | 0.78 | 7.14 | 0.77 | 1.05 |
| 3501 | – | – | – | – | – | – |
| 3502 | – | – | – | – | – | – |
| 3503 | -24.76 | 0.75 | 0.78 | 7.30 | 0.77 | 1.05 |
| 3504 | -24.35 | 0.76 | 0.79 | 7.80 | 0.78 | 1.04 |
| 3505 | -23.66 | 0.78 | 0.81 | 8.61 | 0.79 | 1.03 |
| 3506 | -23.00 | 0.79 | 0.81 | 9.34 | 0.80 | 1.03 |
| 3507 | -22.88 | 0.79 | 0.81 | 9.46 | 0.81 | 1.03 |
| 3508 | -22.76 | 0.79 | 0.81 | 9.57 | 0.81 | 1.03 |
| 3509 | -22.65 | 0.79 | 0.81 | 9.67 | 0.81 | 1.03 |
| 3510 | -22.55 | 0.79 | 0.81 | 9.75 | 0.81 | 1.03 |
| 3511 | -22.45 | 0.79 | 0.81 | 9.81 | 0.81 | 1.03 |
| 3512 | -22.37 | 0.79 | 0.81 | 9.85 | 0.81 | 1.04 |
| 3513 | -22.30 | 0.79 | 0.80 | 9.87 | 0.81 | 1.04 |
| 3514 | -22.24 | 0.79 | 0.80 | 9.86 | 0.81 | 1.04 |
| 3515 | -22.20 | 0.79 | 0.79 | 9.81 | 0.81 | 1.04 |
| 3516 | -22.18 | 0.78 | 0.79 | 9.74 | 0.80 | 1.04 |
| 3517 | -25.56 | 0.71 | 0.74 | 6.76 | 0.73 | 1.06 |
| 3518 | – | – | – | – | – | – |
| 3519 | -25.41 | 0.71 | 0.74 | 6.96 | 0.74 | 1.05 |
| 3520 | -24.96 | 0.72 | 0.75 | 7.56 | 0.75 | 1.05 |
| 3521 | -24.22 | 0.74 | 0.76 | 8.52 | 0.76 | 1.05 |
| 3522 | -23.54 | 0.75 | 0.77 | 9.34 | 0.77 | 1.05 |
| 3523 | -23.42 | 0.75 | 0.77 | 9.48 | 0.78 | 1.05 |
| 3524 | -23.30 | 0.75 | 0.77 | 9.60 | 0.78 | 1.05 |
| 3525 | -23.19 | 0.75 | 0.77 | 9.71 | 0.78 | 1.05 |

[Table 550]

583

| 3526 | -23.09 | 0.75 | 0.77 | 9.79 | 0.78 | 1.05 |
|------|--------|------|------|------|------|------|
| 3527 | -23.00 | 0.75 | 0.77 | 9.86 | 0.78 | 1.05 |
| 3528 | -22.92 | 0.75 | 0.76 | 9.91 | 0.78 | 1.05 |
| 3529 | -22.85 | 0.75 | 0.76 | 9.92 | 0.78 | 1.05 |
| 3530 | -22.80 | 0.75 | 0.76 | 9.91 | 0.78 | 1.05 |
| 3531 | -22.77 | 0.75 | 0.75 | 9.86 | 0.77 | 1.05 |
| 3532 | -22.75 | 0.74 | 0.75 | 9.78 | 0.77 | 1.05 |
| 3533 | -26.18 | 0.67 | 0.70 | 6.45 | 0.70 | 1.06 |
| 3534 | – | – | – | – | – | – |
| 3535 | -26.01 | 0.68 | 0.70 | 6.69 | 0.71 | 1.06 |
| 3536 | -25.68 | 0.69 | 0.71 | 7.15 | 0.71 | 1.06 |
| 3537 | -24.89 | 0.70 | 0.72 | 8.25 | 0.73 | 1.06 |
| 3538 | -24.18 | 0.71 | 0.73 | 9.17 | 0.74 | 1.06 |
| 3539 | -24.05 | 0.71 | 0.73 | 9.32 | 0.74 | 1.06 |
| 3540 | -23.93 | 0.72 | 0.73 | 9.46 | 0.75 | 1.06 |
| 3541 | -23.82 | 0.72 | 0.73 | 9.58 | 0.75 | 1.06 |
| 3542 | -23.72 | 0.72 | 0.73 | 9.67 | 0.75 | 1.06 |
| 3543 | -23.63 | 0.72 | 0.73 | 9.75 | 0.75 | 1.06 |
| 3544 | -23.55 | 0.71 | 0.72 | 9.80 | 0.75 | 1.06 |
| 3545 | -23.49 | 0.71 | 0.72 | 9.82 | 0.75 | 1.06 |
| 3546 | -23.45 | 0.71 | 0.72 | 9.80 | 0.75 | 1.06 |
| 3547 | -23.42 | 0.71 | 0.71 | 9.75 | 0.74 | 1.06 |
| 3548 | -23.42 | 0.70 | 0.71 | 9.66 | 0.74 | 1.07 |
| 3549 | -27.06 | 0.64 | 0.66 | 5.76 | 0.67 | 1.06 |
| 3550 | – | – | – | – | – | – |
| 3551 | – | – | – | – | – | – |
| 3552 | -26.88 | 0.64 | 0.66 | 6.03 | 0.67 | 1.06 |
| 3553 | -26.51 | 0.65 | 0.67 | 6.56 | 0.68 | 1.06 |
| 3554 | -25.66 | 0.67 | 0.68 | 7.80 | 0.70 | 1.06 |
| 3555 | -24.91 | 0.68 | 0.69 | 8.83 | 0.71 | 1.07 |
| 3556 | -24.78 | 0.68 | 0.69 | 9.00 | 0.71 | 1.07 |
| 3557 | -24.66 | 0.68 | 0.69 | 9.15 | 0.71 | 1.07 |
| 3558 | -24.55 | 0.68 | 0.69 | 9.28 | 0.72 | 1.07 |
| 3559 | -24.45 | 0.68 | 0.69 | 9.38 | 0.72 | 1.07 |
| 3560 | -24.36 | 0.68 | 0.69 | 9.47 | 0.72 | 1.07 |
| 3561 | -24.29 | 0.68 | 0.68 | 9.52 | 0.72 | 1.07 |
| 3562 | -24.23 | 0.67 | 0.68 | 9.54 | 0.72 | 1.07 |
| 3563 | -24.19 | 0.67 | 0.68 | 9.53 | 0.71 | 1.08 |
| 3564 | -24.17 | 0.67 | 0.67 | 9.47 | 0.71 | 1.08 |
| 3565 | -24.17 | 0.67 | 0.67 | 9.37 | 0.71 | 1.08 |
| 3566 | -28.08 | 0.60 | 0.61 | 4.91 | 0.63 | 1.06 |
| 3567 | – | – | – | – | – | – |
| 3568 | – | – | – | – | – | – |
| 3569 | -27.87 | 0.60 | 0.62 | 5.21 | 0.63 | 1.06 |
| 3570 | -27.47 | 0.61 | 0.63 | 5.80 | 0.64 | 1.07 |
| 3571 | -26.55 | 0.63 | 0.64 | 7.17 | 0.66 | 1.07 |
| 3572 | -25.76 | 0.64 | 0.65 | 8.31 | 0.68 | 1.08 |
| 3573 | -25.62 | 0.64 | 0.65 | 8.49 | 0.68 | 1.08 |
| 3574 | -25.50 | 0.64 | 0.65 | 8.65 | 0.68 | 1.08 |
| 3575 | -25.38 | 0.64 | 0.65 | 8.80 | 0.68 | 1.08 |

[Table 551]

| 3576 | -25.28 | 0.64 | 0.65 | 8.91 | 0.68 | 1.08 |
|------|--------|------|------|------|------|------|
| 3577 | -25.19 | 0.64 | 0.65 | 9.00 | 0.68 | 1.08 |
| 3578 | -25.12 | 0.64 | 0.64 | 9.06 | 0.68 | 1.08 |
| 3579 | -25.06 | 0.64 | 0.64 | 9.09 | 0.68 | 1.09 |
| 3580 | -25.03 | 0.64 | 0.64 | 9.07 | 0.68 | 1.09 |
| 3581 | -25.01 | 0.63 | 0.63 | 9.02 | 0.68 | 1.09 |
| 3582 | -25.03 | 0.63 | 0.63 | 8.91 | 0.67 | 1.09 |
| 3583 | -29.24 | 0.56 | 0.57 | 3.89 | 0.59 | 1.06 |
| 3584 | – | – | – | – | – | – |
| 3585 | – | – | – | – | – | – |
| 3586 | -29.01 | 0.57 | 0.58 | 4.22 | 0.59 | 1.06 |
| 3587 | -28.57 | 0.58 | 0.59 | 4.86 | 0.60 | 1.07 |
| 3588 | -27.56 | 0.59 | 0.60 | 6.36 | 0.63 | 1.07 |
| 3589 | -26.72 | 0.60 | 0.61 | 7.60 | 0.64 | 1.08 |
| 3590 | -26.58 | 0.60 | 0.61 | 7.80 | 0.64 | 1.08 |
| 3591 | -26.45 | 0.60 | 0.61 | 7.98 | 0.65 | 1.09 |
| 3592 | -26.33 | 0.60 | 0.61 | 8.13 | 0.65 | 1.09 |
| 3593 | -26.22 | 0.60 | 0.61 | 8.26 | 0.65 | 1.09 |
| 3594 | -26.13 | 0.60 | 0.61 | 8.35 | 0.65 | 1.09 |
| 3595 | -26.06 | 0.60 | 0.61 | 8.42 | 0.65 | 1.09 |
| 3596 | -26.01 | 0.60 | 0.60 | 8.45 | 0.65 | 1.09 |
| 3597 | -25.97 | 0.60 | 0.60 | 8.43 | 0.65 | 1.09 |
| 3598 | -25.97 | 0.60 | 0.59 | 8.38 | 0.64 | 1.09 |
| 3599 | -25.99 | 0.59 | 0.59 | 8.27 | 0.64 | 1.09 |
| 3600 | -30.57 | 0.53 | 0.53 | 2.73 | 0.55 | 1.05 |
| 3601 | – | – | – | – | – | – |
| 3602 | – | – | – | – | – | – |
| 3603 | -30.32 | 0.53 | 0.53 | 3.07 | 0.55 | 1.05 |
| 3604 | -29.83 | 0.54 | 0.54 | 3.76 | 0.56 | 1.06 |
| 3605 | -28.72 | 0.56 | 0.56 | 5.37 | 0.59 | 1.07 |
| 3606 | -27.81 | 0.57 | 0.57 | 6.70 | 0.61 | 1.08 |
| 3607 | -27.66 | 0.57 | 0.57 | 6.91 | 0.61 | 1.09 |
| 3608 | -27.52 | 0.57 | 0.57 | 7.10 | 0.61 | 1.09 |
| 3609 | -27.40 | 0.57 | 0.57 | 7.27 | 0.61 | 1.09 |
| 3610 | -27.29 | 0.57 | 0.57 | 7.41 | 0.61 | 1.09 |
| 3611 | -27.20 | 0.57 | 0.57 | 7.51 | 0.61 | 1.10 |
| 3612 | -27.12 | 0.57 | 0.57 | 7.58 | 0.61 | 1.10 |
| 3613 | -27.07 | 0.57 | 0.56 | 7.61 | 0.61 | 1.10 |
| 3614 | -27.04 | 0.56 | 0.56 | 7.60 | 0.61 | 1.10 |
| 3615 | -27.04 | 0.56 | 0.56 | 7.54 | 0.61 | 1.10 |
| 3616 | -27.06 | 0.56 | 0.55 | 7.43 | 0.61 | 1.10 |
| 3617 | -24.24 | 0.74 | 0.77 | 7.85 | 0.76 | 1.05 |
| 3618 | – | – | – | – | – | – |
| 3619 | – | – | – | – | – | – |
| 3620 | -24.08 | 0.74 | 0.77 | 8.05 | 0.77 | 1.05 |
| 3621 | -23.60 | 0.76 | 0.78 | 8.65 | 0.78 | 1.04 |
| 3622 | -22.81 | 0.77 | 0.79 | 9.62 | 0.79 | 1.04 |
| 3623 | -22.06 | 0.78 | 0.80 | 10.48 | 0.80 | 1.04 |
| 3624 | -21.92 | 0.78 | 0.80 | 10.63 | 0.80 | 1.04 |
| 3625 | -21.79 | 0.78 | 0.80 | 10.77 | 0.80 | 1.04 |

[Table 552]

| | | | | | |
|---|---|---|---|---|---|
| 3626 | -21.66 | 0.78 | 0.80 | 10.88 | 0.80 | 1.04 |
| 3627 | -21.55 | 0.78 | 0.80 | 10.98 | 0.81 | 1.04 |
| 3628 | -21.45 | 0.78 | 0.79 | 11.06 | 0.81 | 1.04 |
| 3629 | -21.35 | 0.78 | 0.79 | 11.12 | 0.81 | 1.04 |
| 3630 | -21.27 | 0.78 | 0.79 | 11.15 | 0.80 | 1.04 |
| 3631 | -21.21 | 0.78 | 0.78 | 11.14 | 0.80 | 1.04 |
| 3632 | -21.16 | 0.77 | 0.78 | 11.11 | 0.80 | 1.04 |
| 3633 | -21.12 | 0.77 | 0.77 | 11.03 | 0.80 | 1.04 |
| 3634 | -24.93 | 0.70 | 0.73 | 7.44 | 0.73 | 1.06 |
| 3635 | – | – | – | – | – | – |
| 3636 | – | – | – | – | – | – |
| 3637 | -24.76 | 0.70 | 0.73 | 7.67 | 0.73 | 1.06 |
| 3638 | -24.25 | 0.72 | 0.74 | 8.37 | 0.74 | 1.05 |
| 3639 | -23.41 | 0.73 | 0.75 | 9.48 | 0.76 | 1.05 |
| 3640 | -22.64 | 0.74 | 0.76 | 10.43 | 0.77 | 1.05 |
| 3641 | -22.51 | 0.74 | 0.76 | 10.59 | 0.77 | 1.05 |
| 3642 | -22.38 | 0.75 | 0.76 | 10.74 | 0.77 | 1.05 |
| 3643 | -22.25 | 0.75 | 0.76 | 10.86 | 0.77 | 1.05 |
| 3644 | -22.14 | 0.75 | 0.75 | 10.97 | 0.78 | 1.05 |
| 3645 | -22.04 | 0.74 | 0.75 | 11.05 | 0.78 | 1.05 |
| 3646 | -21.95 | 0.74 | 0.75 | 11.11 | 0.78 | 1.06 |
| 3647 | -21.88 | 0.74 | 0.75 | 11.14 | 0.77 | 1.06 |
| 3648 | -21.82 | 0.74 | 0.74 | 11.13 | 0.77 | 1.06 |
| 3649 | -21.77 | 0.74 | 0.74 | 11.09 | 0.77 | 1.06 |
| 3650 | -21.75 | 0.73 | 0.73 | 11.01 | 0.77 | 1.06 |
| 3651 | -25.74 | 0.66 | 0.69 | 6.86 | 0.70 | 1.06 |
| 3652 | – | – | – | – | – | – |
| 3653 | – | – | – | – | – | – |
| 3654 | -25.55 | 0.67 | 0.69 | 7.13 | 0.70 | 1.06 |
| 3655 | -24.99 | 0.68 | 0.70 | 7.92 | 0.71 | 1.06 |
| 3656 | -24.11 | 0.70 | 0.71 | 9.16 | 0.73 | 1.06 |
| 3657 | -23.32 | 0.71 | 0.72 | 10.21 | 0.74 | 1.06 |
| 3658 | -23.19 | 0.71 | 0.72 | 10.38 | 0.74 | 1.06 |
| 3659 | -23.05 | 0.71 | 0.72 | 10.54 | 0.74 | 1.06 |
| 3660 | -22.93 | 0.71 | 0.72 | 10.67 | 0.74 | 1.07 |
| 3661 | -22.82 | 0.71 | 0.71 | 10.79 | 0.74 | 1.07 |
| 3662 | -22.72 | 0.71 | 0.71 | 10.88 | 0.74 | 1.07 |
| 3663 | -22.64 | 0.71 | 0.71 | 10.94 | 0.74 | 1.07 |
| 3664 | -22.57 | 0.70 | 0.71 | 10.96 | 0.74 | 1.07 |
| 3665 | -22.52 | 0.70 | 0.70 | 10.96 | 0.74 | 1.07 |
| 3666 | -22.48 | 0.70 | 0.70 | 10.91 | 0.74 | 1.07 |
| 3667 | -22.47 | 0.69 | 0.69 | 10.82 | 0.74 | 1.07 |
| 3668 | -26.66 | 0.63 | 0.64 | 6.10 | 0.66 | 1.07 |
| 3669 | – | – | – | – | – | – |
| 3670 | -26.46 | 0.63 | 0.65 | 6.40 | 0.66 | 1.07 |
| 3671 | -25.86 | 0.64 | 0.66 | 7.29 | 0.68 | 1.07 |
| 3672 | -24.92 | 0.66 | 0.67 | 8.66 | 0.69 | 1.07 |
| 3673 | -24.11 | 0.67 | 0.68 | 9.81 | 0.71 | 1.07 |
| 3674 | -23.96 | 0.67 | 0.68 | 9.99 | 0.71 | 1.07 |
| 3675 | -23.83 | 0.67 | 0.68 | 10.16 | 0.71 | 1.08 |

[Table 553]

| 3676 | -23.71 | 0.67 | 0.68 | 10.31 | 0.71 | 1.08 |
|------|--------|------|------|-------|------|------|
| 3677 | -23.60 | 0.67 | 0.68 | 10.43 | 0.71 | 1.08 |
| 3678 | -23.50 | 0.67 | 0.67 | 10.52 | 0.71 | 1.08 |
| 3679 | -23.42 | 0.67 | 0.67 | 10.59 | 0.71 | 1.08 |
| 3680 | -23.35 | 0.67 | 0.67 | 10.61 | 0.71 | 1.08 |
| 3681 | -23.31 | 0.66 | 0.66 | 10.61 | 0.71 | 1.08 |
| 3682 | -23.28 | 0.66 | 0.66 | 10.56 | 0.71 | 1.08 |
| 3683 | -23.28 | 0.66 | 0.65 | 10.46 | 0.70 | 1.08 |
| 3684 | -27.51 | 0.59 | 0.61 | 5.50 | 0.63 | 1.07 |
| 3685 | — | — | — | — | — | — |
| 3686 | -27.28 | 0.60 | 0.61 | 5.83 | 0.63 | 1.07 |
| 3687 | -26.85 | 0.61 | 0.62 | 6.47 | 0.64 | 1.07 |
| 3688 | -25.85 | 0.62 | 0.63 | 7.98 | 0.66 | 1.08 |
| 3689 | -24.99 | 0.63 | 0.64 | 9.22 | 0.67 | 1.08 |
| 3690 | -24.85 | 0.63 | 0.64 | 9.42 | 0.68 | 1.08 |
| 3691 | -24.71 | 0.63 | 0.64 | 9.60 | 0.68 | 1.09 |
| 3692 | -24.59 | 0.63 | 0.64 | 9.76 | 0.68 | 1.09 |
| 3693 | -24.48 | 0.63 | 0.64 | 9.89 | 0.68 | 1.09 |
| 3694 | -24.38 | 0.63 | 0.63 | 9.98 | 0.68 | 1.09 |
| 3695 | -24.30 | 0.63 | 0.63 | 10.05 | 0.68 | 1.09 |
| 3696 | -24.24 | 0.63 | 0.63 | 10.08 | 0.68 | 1.09 |
| 3697 | -24.20 | 0.63 | 0.63 | 10.07 | 0.68 | 1.09 |
| 3698 | -24.18 | 0.62 | 0.62 | 10.02 | 0.67 | 1.10 |
| 3699 | -24.19 | 0.62 | 0.62 | 9.91 | 0.67 | 1.10 |
| 3700 | -28.70 | 0.56 | 0.56 | 4.44 | 0.59 | 1.06 |
| 3701 | — | — | — | — | — | — |
| 3702 | — | — | — | — | — | — |
| 3703 | -28.46 | 0.56 | 0.57 | 4.79 | 0.59 | 1.06 |
| 3704 | -27.99 | 0.57 | 0.58 | 5.48 | 0.60 | 1.07 |
| 3705 | -26.91 | 0.59 | 0.59 | 7.10 | 0.62 | 1.08 |
| 3706 | -26.00 | 0.60 | 0.60 | 8.44 | 0.64 | 1.09 |
| 3707 | -25.85 | 0.60 | 0.60 | 8.65 | 0.64 | 1.09 |
| 3708 | -25.71 | 0.60 | 0.60 | 8.85 | 0.64 | 1.09 |
| 3709 | -25.58 | 0.60 | 0.60 | 9.01 | 0.64 | 1.09 |
| 3710 | -25.47 | 0.60 | 0.60 | 9.15 | 0.65 | 1.10 |
| 3711 | -25.37 | 0.60 | 0.60 | 9.26 | 0.65 | 1.10 |
| 3712 | -25.29 | 0.59 | 0.59 | 9.33 | 0.65 | 1.10 |
| 3713 | -25.23 | 0.59 | 0.59 | 9.36 | 0.65 | 1.10 |
| 3714 | -25.19 | 0.59 | 0.59 | 9.35 | 0.64 | 1.10 |
| 3715 | -25.19 | 0.59 | 0.58 | 9.29 | 0.64 | 1.10 |
| 3716 | -25.20 | 0.58 | 0.58 | 9.18 | 0.64 | 1.10 |
| 3717 | -30.07 | 0.52 | 0.52 | 3.23 | 0.54 | 1.05 |
| 3718 | — | — | — | — | — | — |
| 3719 | — | — | — | — | — | — |
| 3720 | -29.80 | 0.53 | 0.53 | 3.60 | 0.55 | 1.05 |
| 3721 | -29.28 | 0.53 | 0.53 | 4.33 | 0.56 | 1.06 |
| 3722 | -28.11 | 0.55 | 0.55 | 6.04 | 0.58 | 1.08 |
| 3723 | -27.14 | 0.56 | 0.56 | 7.46 | 0.60 | 1.09 |
| 3724 | -26.98 | 0.56 | 0.56 | 7.69 | 0.60 | 1.09 |
| 3725 | -26.83 | 0.56 | 0.56 | 7.89 | 0.61 | 1.10 |

[Table 554]

| 3726 | -26.70 | 0.56 | 0.56 | 8.07 | 0.61 | 1.10 |
| 3727 | -26.58 | 0.56 | 0.56 | 8.21 | 0.61 | 1.10 |
| 3728 | -26.48 | 0.56 | 0.56 | 8.32 | 0.61 | 1.10 |
| 3729 | -26.40 | 0.56 | 0.56 | 8.40 | 0.61 | 1.11 |
| 3730 | -26.35 | 0.56 | 0.55 | 8.43 | 0.61 | 1.11 |
| 3731 | -26.31 | 0.56 | 0.55 | 8.42 | 0.61 | 1.11 |
| 3732 | -26.31 | 0.55 | 0.55 | 8.35 | 0.61 | 1.11 |
| 3733 | -26.34 | 0.55 | 0.54 | 8.23 | 0.60 | 1.11 |
| 3734 | -25.06 | 0.66 | 0.68 | 7.61 | 0.69 | 1.07 |
| 3735 | – | – | – | – | – | – |
| 3736 | – | – | – | – | – | – |
| 3737 | -24.85 | 0.66 | 0.68 | 7.91 | 0.70 | 1.07 |
| 3738 | -24.24 | 0.67 | 0.69 | 8.80 | 0.71 | 1.07 |
| 3739 | -23.27 | 0.69 | 0.70 | 10.19 | 0.72 | 1.07 |
| 3740 | -22.41 | 0.70 | 0.70 | 11.37 | 0.74 | 1.07 |
| 3741 | -22.26 | 0.70 | 0.70 | 11.56 | 0.74 | 1.07 |
| 3742 | -22.12 | 0.70 | 0.70 | 11.74 | 0.74 | 1.07 |
| 3743 | -21.98 | 0.70 | 0.70 | 11.89 | 0.74 | 1.07 |
| 3744 | -21.87 | 0.70 | 0.70 | 12.02 | 0.74 | 1.07 |
| 3745 | -21.76 | 0.70 | 0.70 | 12.12 | 0.74 | 1.07 |
| 3746 | -21.66 | 0.69 | 0.70 | 12.19 | 0.74 | 1.08 |
| 3747 | -21.59 | 0.69 | 0.69 | 12.23 | 0.74 | 1.08 |
| 3748 | -21.53 | 0.69 | 0.69 | 12.23 | 0.74 | 1.08 |
| 3749 | -21.49 | 0.69 | 0.68 | 12.18 | 0.74 | 1.08 |
| 3750 | -21.47 | 0.68 | 0.68 | 12.10 | 0.73 | 1.08 |
| 3751 | -26.02 | 0.62 | 0.63 | 6.80 | 0.66 | 1.07 |
| 3752 | – | – | – | – | – | – |
| 3753 | – | – | – | – | – | – |
| 3754 | -25.80 | 0.63 | 0.64 | 7.13 | 0.66 | 1.07 |
| 3755 | -25.14 | 0.64 | 0.65 | 8.11 | 0.67 | 1.07 |
| 3756 | -24.12 | 0.65 | 0.66 | 9.63 | 0.69 | 1.07 |
| 3757 | -23.24 | 0.66 | 0.67 | 10.89 | 0.70 | 1.08 |
| 3758 | -23.09 | 0.66 | 0.67 | 11.10 | 0.71 | 1.08 |
| 3759 | -22.95 | 0.66 | 0.67 | 11.28 | 0.71 | 1.08 |
| 3760 | -22.81 | 0.66 | 0.66 | 11.44 | 0.71 | 1.08 |
| 3761 | -22.69 | 0.66 | 0.66 | 11.58 | 0.71 | 1.09 |
| 3762 | -22.59 | 0.66 | 0.66 | 11.68 | 0.71 | 1.09 |
| 3763 | -22.50 | 0.66 | 0.66 | 11.76 | 0.71 | 1.09 |
| 3764 | -22.43 | 0.66 | 0.65 | 11.79 | 0.71 | 1.09 |
| 3765 | -22.38 | 0.65 | 0.65 | 11.79 | 0.71 | 1.09 |
| 3766 | -22.35 | 0.65 | 0.65 | 11.74 | 0.70 | 1.09 |
| 3767 | -22.34 | 0.65 | 0.64 | 11.64 | 0.70 | 1.09 |
| 3768 | -27.12 | 0.58 | 0.59 | 5.82 | 0.62 | 1.07 |
| 3769 | – | – | – | – | – | – |
| 3770 | – | – | – | – | – | – |
| 3771 | -26.88 | 0.59 | 0.60 | 6.18 | 0.62 | 1.07 |
| 3772 | -26.17 | 0.60 | 0.61 | 7.24 | 0.64 | 1.07 |
| 3773 | -25.10 | 0.62 | 0.62 | 8.87 | 0.66 | 1.08 |
| 3774 | -24.18 | 0.62 | 0.63 | 10.22 | 0.67 | 1.09 |
| 3775 | -24.02 | 0.62 | 0.63 | 10.44 | 0.67 | 1.09 |

[Table 555]

| 3776 | -23.88 | 0.62 | 0.63 | 10.63 | 0.68 | 1.09 |
| 3777 | -23.75 | 0.62 | 0.63 | 10.81 | 0.68 | 1.10 |
| 3778 | -23.62 | 0.62 | 0.62 | 10.95 | 0.68 | 1.10 |
| 3779 | -23.52 | 0.62 | 0.62 | 11.06 | 0.68 | 1.10 |
| 3780 | -23.44 | 0.62 | 0.62 | 11.13 | 0.68 | 1.10 |
| 3781 | -23.37 | 0.62 | 0.62 | 11.17 | 0.68 | 1.10 |
| 3782 | -23.32 | 0.62 | 0.61 | 11.16 | 0.67 | 1.10 |
| 3783 | -23.30 | 0.61 | 0.61 | 11.10 | 0.67 | 1.11 |
| 3784 | -23.31 | 0.61 | 0.60 | 10.99 | 0.67 | 1.11 |
| 3785 | -28.37 | 0.55 | 0.55 | 4.68 | 0.58 | 1.06 |
| 3786 | – | – | – | – | – | – |
| 3787 | -28.11 | 0.55 | 0.56 | 5.06 | 0.58 | 1.07 |
| 3788 | -27.35 | 0.56 | 0.57 | 6.18 | 0.60 | 1.07 |
| 3789 | -26.20 | 0.58 | 0.58 | 7.92 | 0.62 | 1.08 |
| 3790 | -25.24 | 0.59 | 0.59 | 9.36 | 0.64 | 1.10 |
| 3791 | -25.07 | 0.59 | 0.59 | 9.59 | 0.64 | 1.10 |
| 3792 | -24.93 | 0.59 | 0.59 | 9.79 | 0.64 | 1.10 |
| 3793 | -24.79 | 0.59 | 0.59 | 9.97 | 0.64 | 1.10 |
| 3794 | -24.67 | 0.59 | 0.59 | 10.11 | 0.64 | 1.11 |
| 3795 | -24.57 | 0.59 | 0.59 | 10.23 | 0.64 | 1.11 |
| 3796 | -24.48 | 0.59 | 0.58 | 10.30 | 0.64 | 1.11 |
| 3797 | -24.42 | 0.58 | 0.58 | 10.34 | 0.64 | 1.11 |
| 3798 | -24.38 | 0.58 | 0.58 | 10.32 | 0.64 | 1.11 |
| 3799 | -24.36 | 0.58 | 0.57 | 10.26 | 0.64 | 1.11 |
| 3800 | -24.38 | 0.57 | 0.57 | 10.14 | 0.63 | 1.11 |
| 3801 | -29.52 | 0.52 | 0.51 | 3.79 | 0.54 | 1.05 |
| 3802 | – | – | – | – | – | – |
| 3803 | -29.23 | 0.52 | 0.52 | 4.19 | 0.54 | 1.06 |
| 3804 | -28.69 | 0.53 | 0.53 | 4.96 | 0.56 | 1.07 |
| 3805 | -27.45 | 0.54 | 0.54 | 6.78 | 0.58 | 1.08 |
| 3806 | -26.43 | 0.55 | 0.55 | 8.28 | 0.60 | 1.10 |
| 3807 | -26.26 | 0.55 | 0.55 | 8.52 | 0.60 | 1.10 |
| 3808 | -26.11 | 0.55 | 0.55 | 8.74 | 0.60 | 1.11 |
| 3809 | -25.96 | 0.55 | 0.55 | 8.92 | 0.61 | 1.11 |
| 3810 | -25.84 | 0.55 | 0.55 | 9.08 | 0.61 | 1.11 |
| 3811 | -25.74 | 0.55 | 0.55 | 9.19 | 0.61 | 1.11 |
| 3812 | -25.65 | 0.55 | 0.55 | 9.27 | 0.61 | 1.12 |
| 3813 | -25.59 | 0.55 | 0.54 | 9.30 | 0.61 | 1.12 |
| 3814 | -25.55 | 0.55 | 0.54 | 9.28 | 0.60 | 1.12 |
| 3815 | -25.55 | 0.54 | 0.53 | 9.21 | 0.60 | 1.12 |
| 3816 | -25.58 | 0.54 | 0.53 | 9.08 | 0.60 | 1.12 |
| 3817 | -26.45 | 0.58 | 0.58 | 6.55 | 0.61 | 1.07 |
| 3818 | – | – | – | – | – | – |
| 3819 | – | – | – | – | – | – |
| 3820 | -26.19 | 0.58 | 0.59 | 6.94 | 0.62 | 1.07 |
| 3821 | -25.44 | 0.59 | 0.60 | 8.08 | 0.63 | 1.08 |
| 3822 | -24.30 | 0.61 | 0.61 | 9.84 | 0.65 | 1.09 |
| 3823 | -23.33 | 0.62 | 0.62 | 11.30 | 0.67 | 1.10 |
| 3824 | -23.16 | 0.62 | 0.62 | 11.53 | 0.67 | 1.10 |
| 3825 | -23.01 | 0.62 | 0.62 | 11.74 | 0.67 | 1.10 |

[Table 556]

| 3826 | -22.87 | 0.62 | 0.61 | 11.93 | 0.67 | 1.11 |
|------|--------|------|------|-------|------|------|
| 3827 | -22.74 | 0.62 | 0.61 | 12.08 | 0.67 | 1.11 |
| 3828 | -22.63 | 0.61 | 0.61 | 12.20 | 0.67 | 1.11 |
| 3829 | -22.54 | 0.61 | 0.61 | 12.28 | 0.67 | 1.11 |
| 3830 | -22.47 | 0.61 | 0.61 | 12.31 | 0.67 | 1.11 |
| 3831 | -22.42 | 0.61 | 0.60 | 12.30 | 0.67 | 1.12 |
| 3832 | -22.39 | 0.60 | 0.60 | 12.24 | 0.67 | 1.12 |
| 3833 | -22.40 | 0.60 | 0.59 | 12.13 | 0.66 | 1.12 |
| 3834 | -27.75 | 0.54 | 0.54 | 5.35 | 0.57 | 1.07 |
| 3835 | – | – | – | – | – | – |
| 3836 | – | – | – | – | – | – |
| 3837 | -27.47 | 0.55 | 0.55 | 5.75 | 0.58 | 1.07 |
| 3838 | -26.67 | 0.56 | 0.56 | 6.95 | 0.59 | 1.08 |
| 3839 | -25.45 | 0.57 | 0.57 | 8.81 | 0.62 | 1.09 |
| 3840 | -24.44 | 0.58 | 0.58 | 10.33 | 0.63 | 1.11 |
| 3841 | -24.27 | 0.58 | 0.58 | 10.58 | 0.64 | 1.11 |
| 3842 | -24.11 | 0.58 | 0.58 | 10.80 | 0.64 | 1.11 |
| 3843 | -23.97 | 0.58 | 0.58 | 10.98 | 0.64 | 1.11 |
| 3844 | -23.84 | 0.58 | 0.58 | 11.14 | 0.64 | 1.12 |
| 3845 | -23.73 | 0.58 | 0.57 | 11.26 | 0.64 | 1.12 |
| 3846 | -23.64 | 0.58 | 0.57 | 11.34 | 0.64 | 1.12 |
| 3847 | -23.58 | 0.57 | 0.57 | 11.37 | 0.64 | 1.12 |
| 3848 | -23.53 | 0.57 | 0.56 | 11.35 | 0.64 | 1.13 |
| 3849 | -23.52 | 0.57 | 0.56 | 11.28 | 0.63 | 1.13 |
| 3850 | -23.54 | 0.56 | 0.55 | 11.16 | 0.63 | 1.13 |
| 3851 | -29.23 | 0.51 | 0.50 | 4.01 | 0.53 | 1.05 |
| 3852 | – | – | – | – | – | – |
| 3853 | – | – | – | – | – | – |
| 3854 | -28.93 | 0.51 | 0.50 | 4.42 | 0.53 | 1.06 |
| 3855 | -28.06 | 0.52 | 0.52 | 5.65 | 0.55 | 1.07 |
| 3856 | -26.76 | 0.54 | 0.53 | 7.57 | 0.58 | 1.09 |
| 3857 | -25.69 | 0.54 | 0.54 | 9.16 | 0.60 | 1.11 |
| 3858 | -25.51 | 0.54 | 0.54 | 9.41 | 0.60 | 1.11 |
| 3859 | -25.35 | 0.54 | 0.54 | 9.63 | 0.60 | 1.12 |
| 3860 | -25.20 | 0.54 | 0.54 | 9.83 | 0.60 | 1.12 |
| 3861 | -25.07 | 0.54 | 0.54 | 9.98 | 0.60 | 1.12 |
| 3862 | -24.96 | 0.54 | 0.54 | 10.10 | 0.60 | 1.13 |
| 3863 | -24.88 | 0.54 | 0.53 | 10.18 | 0.60 | 1.13 |
| 3864 | -24.81 | 0.54 | 0.53 | 10.21 | 0.60 | 1.13 |
| 3865 | -24.77 | 0.54 | 0.53 | 10.18 | 0.60 | 1.13 |
| 3866 | -24.77 | 0.53 | 0.52 | 10.10 | 0.60 | 1.13 |
| 3867 | -24.80 | 0.53 | 0.52 | 9.96 | 0.59 | 1.13 |
| 3868 | -28.62 | 0.50 | 0.49 | 4.66 | 0.52 | 1.06 |
| 3869 | – | – | – | – | – | – |
| 3870 | – | – | – | – | – | – |
| 3871 | -28.31 | 0.50 | 0.49 | 5.10 | 0.53 | 1.06 |
| 3872 | -27.40 | 0.51 | 0.51 | 6.39 | 0.55 | 1.08 |
| 3873 | -26.05 | 0.53 | 0.52 | 8.41 | 0.57 | 1.10 |
| 3874 | -24.94 | 0.54 | 0.53 | 10.06 | 0.59 | 1.12 |
| 3875 | -24.75 | 0.54 | 0.53 | 10.33 | 0.60 | 1.12 |

[Table 557]

590

| 3876 | -24.58 | 0.54 | 0.53 | 10.56 | 0.60 | 1.13 |
|------|--------|------|------|-------|------|------|
| 3877 | -24.43 | 0.54 | 0.53 | 10.76 | 0.60 | 1.13 |
| 3878 | -24.29 | 0.54 | 0.53 | 10.92 | 0.60 | 1.14 |
| 3879 | -24.18 | 0.53 | 0.53 | 11.04 | 0.60 | 1.14 |
| 3880 | -24.09 | 0.53 | 0.52 | 11.11 | 0.60 | 1.14 |
| 3881 | -24.02 | 0.53 | 0.52 | 11.13 | 0.60 | 1.14 |
| 3882 | -23.98 | 0.53 | 0.52 | 11.10 | 0.60 | 1.15 |
| 3883 | -23.98 | 0.52 | 0.51 | 11.01 | 0.60 | 1.15 |
| 3884 | -24.01 | 0.52 | 0.51 | 10.85 | 0.59 | 1.15 |
| 3885 | -23.97 | 1.10 | 1.19 | 3.36 | 1.01 | 0.95 |
| 3886 | – | – | – | – | – | – |
| 3887 | – | – | – | – | – | – |
| 3888 | -24.07 | 1.10 | 1.20 | 3.13 | 1.02 | 0.94 |
| 3889 | -24.34 | 1.13 | 1.23 | 2.48 | 1.03 | 0.94 |
| 3890 | -24.46 | 1.18 | 1.28 | 1.35 | 1.07 | 0.92 |
| 3891 | -24.40 | 1.19 | 1.28 | 1.32 | 1.07 | 0.92 |
| 3892 | -24.33 | 1.19 | 1.29 | 1.31 | 1.07 | 0.92 |
| 3893 | -24.26 | 1.19 | 1.29 | 1.30 | 1.08 | 0.92 |
| 3894 | -24.18 | 1.19 | 1.29 | 1.30 | 1.08 | 0.93 |
| 3895 | -24.09 | 1.19 | 1.29 | 1.30 | 1.08 | 0.93 |
| 3896 | -24.00 | 1.19 | 1.28 | 1.30 | 1.08 | 0.93 |
| 3897 | -23.91 | 1.19 | 1.28 | 1.30 | 1.08 | 0.93 |
| 3898 | -23.82 | 1.19 | 1.28 | 1.30 | 1.08 | 0.93 |
| 3899 | -23.73 | 1.19 | 1.27 | 1.28 | 1.09 | 0.93 |
| 3900 | -23.65 | 1.18 | 1.27 | 1.25 | 1.09 | 0.93 |
| 3901 | -23.87 | 1.05 | 1.14 | 4.17 | 0.98 | 0.96 |
| 3902 | – | – | – | – | – | – |
| 3903 | – | – | – | – | – | – |
| 3904 | -23.95 | 1.06 | 1.15 | 3.98 | 0.99 | 0.96 |
| 3905 | -24.13 | 1.08 | 1.17 | 3.44 | 1.00 | 0.95 |
| 3906 | -24.09 | 1.13 | 1.22 | 2.53 | 1.04 | 0.94 |
| 3907 | -24.03 | 1.14 | 1.22 | 2.51 | 1.04 | 0.94 |
| 3908 | -23.96 | 1.14 | 1.22 | 2.50 | 1.04 | 0.94 |
| 3909 | -23.89 | 1.14 | 1.22 | 2.49 | 1.04 | 0.94 |
| 3910 | -23.81 | 1.14 | 1.22 | 2.49 | 1.05 | 0.94 |
| 3911 | -23.73 | 1.14 | 1.22 | 2.49 | 1.05 | 0.94 |
| 3912 | -23.64 | 1.14 | 1.22 | 2.49 | 1.05 | 0.94 |
| 3913 | -23.56 | 1.14 | 1.22 | 2.48 | 1.05 | 0.94 |
| 3914 | -23.48 | 1.14 | 1.21 | 2.47 | 1.05 | 0.94 |
| 3915 | -23.40 | 1.14 | 1.21 | 2.45 | 1.05 | 0.94 |
| 3916 | -23.33 | 1.13 | 1.20 | 2.41 | 1.05 | 0.94 |
| 3917 | -23.87 | 1.01 | 1.09 | 4.85 | 0.96 | 0.97 |
| 3918 | – | – | – | – | – | – |
| 3919 | – | – | – | – | – | – |
| 3920 | -23.92 | 1.01 | 1.09 | 4.70 | 0.96 | 0.97 |
| 3921 | -24.02 | 1.03 | 1.12 | 4.28 | 0.97 | 0.96 |
| 3922 | -23.85 | 1.09 | 1.16 | 3.58 | 1.01 | 0.95 |
| 3923 | -23.78 | 1.09 | 1.16 | 3.57 | 1.01 | 0.95 |
| 3924 | -23.71 | 1.09 | 1.16 | 3.56 | 1.01 | 0.95 |
| 3925 | -23.64 | 1.09 | 1.16 | 3.56 | 1.01 | 0.95 |

[Table 558]

| | | | | | |
|---|---|---|---|---|---|
| 3926 | -23.57 | 1.09 | 1.16 | 3.56 | 1.02 | 0.95 |
| 3927 | -23.49 | 1.09 | 1.16 | 3.56 | 1.02 | 0.95 |
| 3928 | -23.41 | 1.09 | 1.16 | 3.55 | 1.02 | 0.95 |
| 3929 | -23.34 | 1.09 | 1.16 | 3.54 | 1.02 | 0.95 |
| 3930 | -23.26 | 1.09 | 1.16 | 3.52 | 1.02 | 0.95 |
| 3931 | -23.20 | 1.09 | 1.15 | 3.49 | 1.02 | 0.95 |
| 3932 | -23.14 | 1.08 | 1.14 | 3.44 | 1.02 | 0.96 |
| 3933 | -23.96 | 0.96 | 1.04 | 5.40 | 0.93 | 0.99 |
| 3934 | – | – | – | – | – | – |
| 3935 | – | – | – | – | – | – |
| 3936 | -23.99 | 0.97 | 1.04 | 5.29 | 0.93 | 0.98 |
| 3937 | -24.02 | 0.99 | 1.06 | 4.98 | 0.95 | 0.98 |
| 3938 | -23.72 | 1.04 | 1.11 | 4.50 | 0.98 | 0.96 |
| 3939 | -23.65 | 1.04 | 1.11 | 4.50 | 0.98 | 0.96 |
| 3940 | -23.58 | 1.04 | 1.11 | 4.50 | 0.98 | 0.96 |
| 3941 | -23.51 | 1.04 | 1.11 | 4.50 | 0.98 | 0.96 |
| 3942 | -23.44 | 1.05 | 1.11 | 4.50 | 0.98 | 0.96 |
| 3943 | -23.37 | 1.05 | 1.11 | 4.50 | 0.99 | 0.96 |
| 3944 | -23.29 | 1.05 | 1.10 | 4.49 | 0.99 | 0.96 |
| 3945 | -23.22 | 1.04 | 1.10 | 4.48 | 0.99 | 0.96 |
| 3946 | -23.16 | 1.04 | 1.10 | 4.45 | 0.99 | 0.96 |
| 3947 | -23.10 | 1.04 | 1.09 | 4.41 | 0.99 | 0.97 |
| 3948 | -23.05 | 1.04 | 1.09 | 4.35 | 0.99 | 0.97 |
| 3949 | -24.14 | 0.92 | 0.99 | 5.82 | 0.90 | 1.00 |
| 3950 | – | – | – | – | – | – |
| 3951 | – | – | – | – | – | – |
| 3952 | -24.14 | 0.93 | 1.00 | 5.75 | 0.91 | 1.00 |
| 3953 | -24.11 | 0.95 | 1.02 | 5.55 | 0.92 | 0.99 |
| 3954 | -23.69 | 0.99 | 1.05 | 5.29 | 0.95 | 0.97 |
| 3955 | -23.63 | 1.00 | 1.05 | 5.30 | 0.95 | 0.97 |
| 3956 | -23.56 | 1.00 | 1.06 | 5.31 | 0.95 | 0.97 |
| 3957 | -23.49 | 1.00 | 1.06 | 5.31 | 0.95 | 0.97 |
| 3958 | -23.42 | 1.00 | 1.05 | 5.32 | 0.95 | 0.97 |
| 3959 | -23.35 | 1.00 | 1.05 | 5.32 | 0.96 | 0.97 |
| 3960 | -23.28 | 1.00 | 1.05 | 5.31 | 0.96 | 0.97 |
| 3961 | -23.22 | 1.00 | 1.05 | 5.29 | 0.96 | 0.98 |
| 3962 | -23.16 | 1.00 | 1.05 | 5.26 | 0.96 | 0.98 |
| 3963 | -23.11 | 0.99 | 1.04 | 5.21 | 0.96 | 0.98 |
| 3964 | -23.07 | 0.99 | 1.04 | 5.15 | 0.95 | 0.98 |
| 3965 | -24.38 | 0.89 | 0.95 | 6.08 | 0.88 | 1.01 |
| 3966 | – | – | – | – | – | – |
| 3967 | -24.35 | 0.90 | 0.96 | 6.04 | 0.88 | 1.01 |
| 3968 | -24.30 | 0.91 | 0.97 | 5.99 | 0.89 | 1.00 |
| 3969 | -23.77 | 0.95 | 1.00 | 5.96 | 0.92 | 0.99 |
| 3970 | -23.70 | 0.95 | 1.00 | 5.97 | 0.92 | 0.99 |
| 3971 | -23.63 | 0.95 | 1.00 | 5.99 | 0.92 | 0.99 |
| 3972 | -23.56 | 0.95 | 1.00 | 6.00 | 0.92 | 0.99 |
| 3973 | -23.49 | 0.95 | 1.00 | 6.01 | 0.92 | 0.99 |
| 3974 | -23.43 | 0.96 | 1.00 | 6.01 | 0.92 | 0.99 |
| 3975 | -23.36 | 0.95 | 1.00 | 6.00 | 0.93 | 0.99 |

[Table 559]

| | | | | | | |
|------|--------|------|------|------|------|------|
| 3976 | -23.31 | 0.95 | 1.00 | 5.98 | 0.93 | 0.99 |
| 3977 | -23.26 | 0.95 | 0.99 | 5.95 | 0.93 | 0.99 |
| 3978 | -23.21 | 0.95 | 0.99 | 5.89 | 0.92 | 0.99 |
| 3979 | -23.18 | 0.95 | 0.98 | 5.82 | 0.92 | 0.99 |
| 3980 | -24.70 | 0.85 | 0.91 | 6.26 | 0.85 | 1.02 |
| 3981 | – | – | – | – | – | – |
| 3982 | – | – | – | – | – | – |
| 3983 | -24.66 | 0.86 | 0.91 | 6.27 | 0.85 | 1.02 |
| 3984 | -24.57 | 0.87 | 0.92 | 6.28 | 0.86 | 1.01 |
| 3985 | -23.95 | 0.91 | 0.95 | 6.48 | 0.89 | 1.00 |
| 3986 | -23.88 | 0.91 | 0.95 | 6.51 | 0.89 | 1.00 |
| 3987 | -23.80 | 0.91 | 0.96 | 6.54 | 0.89 | 1.00 |
| 3988 | -23.73 | 0.91 | 0.96 | 6.56 | 0.89 | 1.00 |
| 3989 | -23.66 | 0.91 | 0.95 | 6.57 | 0.89 | 1.00 |
| 3990 | -23.60 | 0.91 | 0.95 | 6.58 | 0.89 | 1.00 |
| 3991 | -23.54 | 0.91 | 0.95 | 6.57 | 0.90 | 1.00 |
| 3992 | -23.49 | 0.91 | 0.95 | 6.55 | 0.90 | 1.00 |
| 3993 | -23.44 | 0.91 | 0.95 | 6.51 | 0.89 | 1.00 |
| 3994 | -23.41 | 0.91 | 0.94 | 6.45 | 0.89 | 1.00 |
| 3995 | -23.39 | 0.90 | 0.94 | 6.37 | 0.89 | 1.00 |
| 3996 | -25.11 | 0.81 | 0.86 | 6.31 | 0.82 | 1.03 |
| 3997 | – | – | – | – | – | – |
| 3998 | – | – | – | – | – | – |
| 3999 | -25.05 | 0.82 | 0.87 | 6.35 | 0.82 | 1.03 |
| 4000 | -24.93 | 0.83 | 0.88 | 6.43 | 0.83 | 1.03 |
| 4001 | -24.21 | 0.86 | 0.91 | 6.88 | 0.86 | 1.01 |
| 4002 | -24.14 | 0.87 | 0.91 | 6.92 | 0.86 | 1.01 |
| 4003 | -24.06 | 0.87 | 0.91 | 6.95 | 0.86 | 1.01 |
| 4004 | -23.99 | 0.87 | 0.91 | 6.98 | 0.86 | 1.01 |
| 4005 | -23.93 | 0.87 | 0.91 | 7.00 | 0.86 | 1.01 |
| 4006 | -23.86 | 0.87 | 0.91 | 7.01 | 0.86 | 1.01 |
| 4007 | -23.81 | 0.87 | 0.90 | 7.01 | 0.86 | 1.01 |
| 4008 | -23.76 | 0.87 | 0.90 | 6.99 | 0.86 | 1.01 |
| 4009 | -23.72 | 0.87 | 0.90 | 6.95 | 0.86 | 1.01 |
| 4010 | -23.69 | 0.86 | 0.89 | 6.89 | 0.86 | 1.01 |
| 4011 | -23.68 | 0.86 | 0.89 | 6.80 | 0.86 | 1.02 |
| 4012 | -25.61 | 0.77 | 0.82 | 6.20 | 0.79 | 1.04 |
| 4013 | – | – | – | – | – | – |
| 4014 | – | – | – | – | – | – |
| 4015 | -25.53 | 0.78 | 0.82 | 6.28 | 0.79 | 1.04 |
| 4016 | -25.38 | 0.79 | 0.83 | 6.44 | 0.80 | 1.04 |
| 4017 | -24.57 | 0.82 | 0.86 | 7.13 | 0.83 | 1.02 |
| 4018 | -24.49 | 0.83 | 0.86 | 7.19 | 0.83 | 1.02 |
| 4019 | -24.41 | 0.83 | 0.86 | 7.24 | 0.83 | 1.02 |
| 4020 | -24.34 | 0.83 | 0.86 | 7.28 | 0.83 | 1.02 |
| 4021 | -24.27 | 0.83 | 0.86 | 7.30 | 0.83 | 1.02 |
| 4022 | -24.21 | 0.83 | 0.86 | 7.32 | 0.83 | 1.02 |
| 4023 | -24.16 | 0.83 | 0.86 | 7.32 | 0.83 | 1.03 |
| 4024 | -24.11 | 0.83 | 0.86 | 7.30 | 0.83 | 1.03 |
| 4025 | -24.08 | 0.83 | 0.85 | 7.26 | 0.83 | 1.03 |

[Table 560]

| 4026 | -24.06 | 0.82 | 0.85 | 7.19 | 0.83 | 1.03 |
|------|--------|------|------|------|------|------|
| 4027 | -24.05 | 0.82 | 0.84 | 7.10 | 0.83 | 1.03 |
| 4028 | -26.20 | 0.74 | 0.78 | 5.95 | 0.76 | 1.05 |
| 4029 | – | – | – | – | – | – |
| 4030 | – | – | – | – | – | – |
| 4031 | -26.10 | 0.74 | 0.78 | 6.07 | 0.76 | 1.05 |
| 4032 | -25.92 | 0.75 | 0.79 | 6.29 | 0.77 | 1.05 |
| 4033 | -25.01 | 0.78 | 0.82 | 7.25 | 0.80 | 1.04 |
| 4034 | -24.92 | 0.79 | 0.82 | 7.32 | 0.80 | 1.04 |
| 4035 | -24.85 | 0.79 | 0.82 | 7.38 | 0.80 | 1.04 |
| 4036 | -24.77 | 0.79 | 0.82 | 7.43 | 0.80 | 1.04 |
| 4037 | -24.71 | 0.79 | 0.82 | 7.47 | 0.80 | 1.04 |
| 4038 | -24.65 | 0.79 | 0.82 | 7.49 | 0.80 | 1.04 |
| 4039 | -24.60 | 0.79 | 0.82 | 7.49 | 0.80 | 1.04 |
| 4040 | -24.55 | 0.79 | 0.81 | 7.48 | 0.80 | 1.04 |
| 4041 | -24.52 | 0.79 | 0.81 | 7.44 | 0.80 | 1.04 |
| 4042 | -24.51 | 0.78 | 0.80 | 7.37 | 0.80 | 1.04 |
| 4043 | -24.51 | 0.78 | 0.80 | 7.27 | 0.80 | 1.04 |
| 4044 | -26.88 | 0.70 | 0.74 | 5.55 | 0.73 | 1.06 |
| 4045 | – | – | – | – | – | – |
| 4046 | – | – | – | – | – | – |
| 4047 | -26.77 | 0.71 | 0.74 | 5.70 | 0.73 | 1.06 |
| 4048 | -26.55 | 0.71 | 0.75 | 5.99 | 0.74 | 1.05 |
| 4049 | -25.54 | 0.75 | 0.78 | 7.22 | 0.77 | 1.05 |
| 4050 | -25.45 | 0.75 | 0.78 | 7.30 | 0.77 | 1.05 |
| 4051 | -25.37 | 0.75 | 0.78 | 7.38 | 0.77 | 1.05 |
| 4052 | -25.29 | 0.75 | 0.78 | 7.44 | 0.77 | 1.05 |
| 4053 | -25.23 | 0.75 | 0.78 | 7.49 | 0.77 | 1.05 |
| 4054 | -25.16 | 0.75 | 0.77 | 7.52 | 0.77 | 1.05 |
| 4055 | -25.12 | 0.75 | 0.77 | 7.53 | 0.77 | 1.05 |
| 4056 | -25.08 | 0.75 | 0.77 | 7.52 | 0.77 | 1.05 |
| 4057 | -25.05 | 0.75 | 0.77 | 7.48 | 0.77 | 1.05 |
| 4058 | -25.04 | 0.74 | 0.76 | 7.41 | 0.77 | 1.05 |
| 4059 | -25.05 | 0.74 | 0.76 | 7.31 | 0.77 | 1.05 |
| 4060 | -27.67 | 0.66 | 0.70 | 4.98 | 0.69 | 1.06 |
| 4061 | – | – | – | – | – | – |
| 4062 | – | – | – | – | – | – |
| 4063 | -27.54 | 0.67 | 0.70 | 5.17 | 0.70 | 1.06 |
| 4064 | -27.29 | 0.68 | 0.71 | 5.54 | 0.71 | 1.06 |
| 4065 | -26.16 | 0.71 | 0.73 | 7.03 | 0.73 | 1.06 |
| 4066 | -26.07 | 0.71 | 0.73 | 7.14 | 0.74 | 1.06 |
| 4067 | -25.98 | 0.71 | 0.74 | 7.23 | 0.74 | 1.06 |
| 4068 | -25.90 | 0.71 | 0.73 | 7.30 | 0.74 | 1.06 |
| 4069 | -25.83 | 0.71 | 0.73 | 7.36 | 0.74 | 1.06 |
| 4070 | -25.77 | 0.71 | 0.73 | 7.40 | 0.74 | 1.06 |
| 4071 | -25.73 | 0.71 | 0.73 | 7.42 | 0.74 | 1.06 |
| 4072 | -25.69 | 0.71 | 0.73 | 7.41 | 0.74 | 1.06 |
| 4073 | -25.67 | 0.71 | 0.73 | 7.38 | 0.74 | 1.06 |
| 4074 | -25.66 | 0.71 | 0.72 | 7.31 | 0.74 | 1.06 |
| 4075 | -25.68 | 0.70 | 0.72 | 7.20 | 0.73 | 1.06 |

[Table 561]

| | | | | | | |
|------|--------|------|------|------|------|------|
| 4076 | -28.58 | 0.63 | 0.65 | 4.26 | 0.66 | 1.06 |
| 4077 | – | – | – | – | – | – |
| 4078 | – | – | – | – | – | – |
| 4079 | -28.43 | 0.63 | 0.66 | 4.48 | 0.66 | 1.06 |
| 4080 | -28.13 | 0.64 | 0.67 | 4.92 | 0.67 | 1.06 |
| 4081 | -26.88 | 0.67 | 0.69 | 6.69 | 0.70 | 1.06 |
| 4082 | -26.78 | 0.67 | 0.69 | 6.81 | 0.70 | 1.07 |
| 4083 | -26.69 | 0.67 | 0.69 | 6.92 | 0.71 | 1.07 |
| 4084 | -26.61 | 0.68 | 0.69 | 7.01 | 0.71 | 1.07 |
| 4085 | -26.53 | 0.68 | 0.69 | 7.08 | 0.71 | 1.07 |
| 4086 | -26.47 | 0.68 | 0.69 | 7.13 | 0.71 | 1.07 |
| 4087 | -26.43 | 0.68 | 0.69 | 7.16 | 0.71 | 1.07 |
| 4088 | -26.39 | 0.67 | 0.69 | 7.16 | 0.71 | 1.07 |
| 4089 | -26.37 | 0.67 | 0.68 | 7.13 | 0.71 | 1.07 |
| 4090 | -26.37 | 0.67 | 0.68 | 7.06 | 0.70 | 1.07 |
| 4091 | -26.39 | 0.67 | 0.68 | 6.96 | 0.70 | 1.07 |
| 4092 | -29.61 | 0.59 | 0.61 | 3.37 | 0.62 | 1.06 |
| 4093 | – | – | – | – | – | – |
| 4094 | – | – | – | – | – | – |
| 4095 | -29.44 | 0.60 | 0.62 | 3.63 | 0.62 | 1.06 |
| 4096 | -29.10 | 0.61 | 0.63 | 4.13 | 0.63 | 1.07 |
| 4097 | -27.70 | 0.64 | 0.65 | 6.18 | 0.67 | 1.07 |
| 4098 | -27.60 | 0.64 | 0.65 | 6.33 | 0.67 | 1.07 |
| 4099 | -27.50 | 0.64 | 0.65 | 6.45 | 0.67 | 1.07 |
| 4100 | -27.41 | 0.64 | 0.65 | 6.56 | 0.67 | 1.07 |
| 4101 | -27.34 | 0.64 | 0.65 | 6.64 | 0.67 | 1.07 |
| 4102 | -27.27 | 0.64 | 0.65 | 6.71 | 0.67 | 1.07 |
| 4103 | -27.22 | 0.64 | 0.65 | 6.74 | 0.67 | 1.08 |
| 4104 | -27.19 | 0.64 | 0.65 | 6.75 | 0.67 | 1.08 |
| 4105 | -27.17 | 0.64 | 0.65 | 6.72 | 0.67 | 1.08 |
| 4106 | -27.18 | 0.63 | 0.64 | 6.66 | 0.67 | 1.08 |
| 4107 | -27.20 | 0.63 | 0.64 | 6.55 | 0.67 | 1.08 |
| 4108 | -30.79 | 0.56 | 0.57 | 2.34 | 0.58 | 1.06 |
| 4109 | – | – | – | – | – | – |
| 4110 | – | – | – | – | – | – |
| 4111 | -30.59 | 0.56 | 0.58 | 2.63 | 0.58 | 1.06 |
| 4112 | -30.21 | 0.57 | 0.58 | 3.19 | 0.59 | 1.06 |
| 4113 | -28.64 | 0.60 | 0.61 | 5.51 | 0.63 | 1.07 |
| 4114 | -28.53 | 0.60 | 0.61 | 5.67 | 0.64 | 1.08 |
| 4115 | -28.42 | 0.60 | 0.61 | 5.82 | 0.64 | 1.08 |
| 4116 | -28.33 | 0.60 | 0.61 | 5.94 | 0.64 | 1.08 |
| 4117 | -28.25 | 0.60 | 0.61 | 6.04 | 0.64 | 1.08 |
| 4118 | -28.18 | 0.60 | 0.61 | 6.11 | 0.64 | 1.08 |
| 4119 | -28.12 | 0.60 | 0.61 | 6.16 | 0.64 | 1.08 |
| 4120 | -28.09 | 0.60 | 0.61 | 6.18 | 0.64 | 1.08 |
| 4121 | -28.07 | 0.60 | 0.61 | 6.16 | 0.64 | 1.08 |
| 4122 | -28.08 | 0.60 | 0.60 | 6.10 | 0.64 | 1.08 |
| 4123 | -28.11 | 0.60 | 0.60 | 5.99 | 0.63 | 1.08 |
| 4124 | -23.36 | 1.11 | 1.21 | 3.47 | 1.03 | 0.94 |
| 4125 | – | – | – | – | – | – |

[Table 562]

| 4126 | – | – | – | – | – | – |
|------|------|------|------|------|------|------|
| 4127 | -23.46 | 1.12 | 1.22 | 3.23 | 1.03 | 0.94 |
| 4128 | -23.74 | 1.15 | 1.25 | 2.56 | 1.05 | 0.93 |
| 4129 | -23.97 | 1.18 | 1.28 | 1.76 | 1.07 | 0.93 |
| 4130 | -23.84 | 1.20 | 1.30 | 1.41 | 1.09 | 0.92 |
| 4131 | -23.77 | 1.20 | 1.30 | 1.38 | 1.09 | 0.92 |
| 4132 | -23.70 | 1.21 | 1.31 | 1.36 | 1.09 | 0.92 |
| 4133 | -23.62 | 1.21 | 1.31 | 1.35 | 1.09 | 0.92 |
| 4134 | -23.54 | 1.21 | 1.31 | 1.35 | 1.10 | 0.92 |
| 4135 | -23.44 | 1.21 | 1.30 | 1.35 | 1.10 | 0.93 |
| 4136 | -23.35 | 1.21 | 1.30 | 1.35 | 1.10 | 0.93 |
| 4137 | -23.25 | 1.21 | 1.30 | 1.35 | 1.10 | 0.93 |
| 4138 | -23.16 | 1.21 | 1.29 | 1.34 | 1.10 | 0.93 |
| 4139 | -23.08 | 1.20 | 1.29 | 1.32 | 1.10 | 0.93 |
| 4140 | -22.97 | 1.20 | 1.28 | 1.30 | 1.10 | 0.93 |
| 4141 | -23.23 | 1.07 | 1.16 | 4.32 | 1.00 | 0.96 |
| 4142 | – | – | – | – | – | – |
| 4143 | – | – | – | – | – | – |
| 4144 | -23.31 | 1.08 | 1.17 | 4.11 | 1.01 | 0.95 |
| 4145 | -23.49 | 1.10 | 1.19 | 3.56 | 1.02 | 0.95 |
| 4146 | -23.61 | 1.13 | 1.22 | 2.90 | 1.04 | 0.94 |
| 4147 | -23.44 | 1.15 | 1.24 | 2.60 | 1.05 | 0.93 |
| 4148 | -23.38 | 1.15 | 1.24 | 2.58 | 1.06 | 0.93 |
| 4149 | -23.30 | 1.16 | 1.24 | 2.57 | 1.06 | 0.93 |
| 4150 | -23.23 | 1.16 | 1.24 | 2.56 | 1.06 | 0.93 |
| 4151 | -23.14 | 1.16 | 1.24 | 2.56 | 1.06 | 0.94 |
| 4152 | -23.06 | 1.16 | 1.24 | 2.55 | 1.07 | 0.94 |
| 4153 | -22.97 | 1.16 | 1.24 | 2.55 | 1.07 | 0.94 |
| 4154 | -22.89 | 1.16 | 1.24 | 2.54 | 1.07 | 0.94 |
| 4155 | -22.80 | 1.16 | 1.23 | 2.53 | 1.07 | 0.94 |
| 4156 | -22.74 | 1.15 | 1.23 | 2.50 | 1.07 | 0.94 |
| 4157 | -22.64 | 1.15 | 1.22 | 2.46 | 1.07 | 0.94 |
| 4158 | -23.20 | 1.03 | 1.11 | 5.04 | 0.98 | 0.97 |
| 4159 | – | – | – | – | – | – |
| 4160 | – | – | – | – | – | – |
| 4161 | -23.25 | 1.03 | 1.12 | 4.87 | 0.98 | 0.97 |
| 4162 | -23.36 | 1.05 | 1.14 | 4.43 | 0.99 | 0.96 |
| 4163 | -23.38 | 1.08 | 1.17 | 3.90 | 1.01 | 0.95 |
| 4164 | -23.17 | 1.10 | 1.18 | 3.67 | 1.02 | 0.95 |
| 4165 | -23.11 | 1.11 | 1.18 | 3.66 | 1.03 | 0.95 |
| 4166 | -23.03 | 1.11 | 1.18 | 3.65 | 1.03 | 0.95 |
| 4167 | -22.96 | 1.11 | 1.18 | 3.64 | 1.03 | 0.95 |
| 4168 | -22.88 | 1.11 | 1.18 | 3.64 | 1.03 | 0.95 |
| 4169 | -22.80 | 1.11 | 1.18 | 3.64 | 1.03 | 0.95 |
| 4170 | -22.72 | 1.11 | 1.18 | 3.63 | 1.04 | 0.95 |
| 4171 | -22.64 | 1.11 | 1.18 | 3.61 | 1.04 | 0.95 |
| 4172 | -22.56 | 1.11 | 1.17 | 3.59 | 1.04 | 0.95 |
| 4173 | -22.47 | 1.11 | 1.17 | 3.56 | 1.04 | 0.95 |
| 4174 | -22.42 | 1.10 | 1.16 | 3.51 | 1.04 | 0.95 |
| 4175 | -23.26 | 0.98 | 1.06 | 5.63 | 0.95 | 0.98 |

[Table 563]

596

| 4176 | — | — | — | — | — | — |
|------|------|------|------|------|------|------|
| 4177 | — | — | — | — | — | — |
| 4178 | -23.29 | 0.99 | 1.07 | 5.51 | 0.95 | 0.98 |
| 4179 | -23.33 | 1.01 | 1.08 | 5.17 | 0.96 | 0.97 |
| 4180 | -23.26 | 1.04 | 1.11 | 4.77 | 0.98 | 0.96 |
| 4181 | -23.02 | 1.06 | 1.13 | 4.62 | 0.99 | 0.96 |
| 4182 | -22.95 | 1.06 | 1.13 | 4.61 | 1.00 | 0.96 |
| 4183 | -22.88 | 1.06 | 1.13 | 4.61 | 1.00 | 0.96 |
| 4184 | -22.80 | 1.06 | 1.13 | 4.60 | 1.00 | 0.96 |
| 4185 | -22.73 | 1.06 | 1.13 | 4.60 | 1.00 | 0.96 |
| 4186 | -22.65 | 1.06 | 1.13 | 4.60 | 1.00 | 0.96 |
| 4187 | -22.58 | 1.06 | 1.12 | 4.59 | 1.00 | 0.96 |
| 4188 | -22.50 | 1.06 | 1.12 | 4.57 | 1.01 | 0.96 |
| 4189 | -22.44 | 1.06 | 1.12 | 4.54 | 1.01 | 0.96 |
| 4190 | -22.38 | 1.06 | 1.11 | 4.50 | 1.01 | 0.96 |
| 4191 | -22.31 | 1.05 | 1.11 | 4.44 | 1.00 | 0.97 |
| 4192 | -23.41 | 0.94 | 1.01 | 6.10 | 0.92 | 1.00 |
| 4193 | — | — | — | — | — | — |
| 4194 | — | — | — | — | — | — |
| 4195 | -23.41 | 0.95 | 1.02 | 6.01 | 0.93 | 0.99 |
| 4196 | -23.39 | 0.97 | 1.04 | 5.78 | 0.94 | 0.99 |
| 4197 | -23.25 | 0.99 | 1.06 | 5.52 | 0.95 | 0.98 |
| 4198 | -22.97 | 1.01 | 1.07 | 5.44 | 0.97 | 0.97 |
| 4199 | -22.90 | 1.01 | 1.07 | 5.44 | 0.97 | 0.97 |
| 4200 | -22.83 | 1.02 | 1.07 | 5.44 | 0.97 | 0.97 |
| 4201 | -22.76 | 1.02 | 1.07 | 5.44 | 0.97 | 0.97 |
| 4202 | -22.68 | 1.02 | 1.07 | 5.44 | 0.97 | 0.97 |
| 4203 | -22.61 | 1.02 | 1.07 | 5.44 | 0.97 | 0.97 |
| 4204 | -22.54 | 1.02 | 1.07 | 5.43 | 0.97 | 0.97 |
| 4205 | -22.47 | 1.02 | 1.07 | 5.40 | 0.97 | 0.97 |
| 4206 | -22.41 | 1.01 | 1.06 | 5.37 | 0.97 | 0.98 |
| 4207 | -22.34 | 1.01 | 1.06 | 5.32 | 0.97 | 0.98 |
| 4208 | -22.31 | 1.01 | 1.05 | 5.25 | 0.97 | 0.98 |
| 4209 | -23.63 | 0.90 | 0.97 | 6.44 | 0.89 | 1.01 |
| 4210 | — | — | — | — | — | — |
| 4211 | -23.61 | 0.91 | 0.97 | 6.39 | 0.90 | 1.01 |
| 4212 | -23.54 | 0.93 | 0.99 | 6.26 | 0.91 | 1.00 |
| 4213 | -23.34 | 0.95 | 1.01 | 6.13 | 0.92 | 0.99 |
| 4214 | -23.02 | 0.97 | 1.02 | 6.13 | 0.94 | 0.98 |
| 4215 | -22.95 | 0.97 | 1.02 | 6.14 | 0.94 | 0.98 |
| 4216 | -22.88 | 0.97 | 1.02 | 6.15 | 0.94 | 0.98 |
| 4217 | -22.81 | 0.97 | 1.02 | 6.16 | 0.94 | 0.98 |
| 4218 | -22.74 | 0.97 | 1.02 | 6.16 | 0.94 | 0.98 |
| 4219 | -22.67 | 0.97 | 1.02 | 6.16 | 0.94 | 0.99 |
| 4220 | -22.60 | 0.97 | 1.02 | 6.14 | 0.94 | 0.99 |
| 4221 | -22.54 | 0.97 | 1.02 | 6.12 | 0.94 | 0.99 |
| 4222 | -22.48 | 0.97 | 1.01 | 6.08 | 0.94 | 0.99 |
| 4223 | -22.45 | 0.97 | 1.01 | 6.03 | 0.94 | 0.99 |
| 4224 | -22.40 | 0.96 | 1.00 | 5.95 | 0.94 | 0.99 |
| 4225 | -23.90 | 0.87 | 0.93 | 6.63 | 0.87 | 1.02 |

[Table 564]

| 4226 | — | — | — | — | — | — |
|------|-------|------|------|------|------|------|
| 4227 | -23.86 | 0.88 | 0.93 | 6.62 | 0.87 | 1.02 |
| 4228 | -23.78 | 0.89 | 0.94 | 6.61 | 0.88 | 1.01 |
| 4229 | -23.51 | 0.91 | 0.96 | 6.62 | 0.90 | 1.00 |
| 4230 | -23.17 | 0.92 | 0.97 | 6.70 | 0.91 | 1.00 |
| 4231 | -23.10 | 0.93 | 0.97 | 6.72 | 0.91 | 1.00 |
| 4232 | -23.02 | 0.93 | 0.97 | 6.74 | 0.91 | 1.00 |
| 4233 | -22.95 | 0.93 | 0.97 | 6.75 | 0.91 | 1.00 |
| 4234 | -22.88 | 0.93 | 0.97 | 6.76 | 0.91 | 1.00 |
| 4235 | -22.81 | 0.93 | 0.97 | 6.76 | 0.91 | 1.00 |
| 4236 | -22.75 | 0.93 | 0.97 | 6.74 | 0.91 | 1.00 |
| 4237 | -22.70 | 0.93 | 0.97 | 6.72 | 0.91 | 1.00 |
| 4238 | -22.65 | 0.93 | 0.96 | 6.67 | 0.91 | 1.00 |
| 4239 | -22.62 | 0.92 | 0.96 | 6.61 | 0.91 | 1.00 |
| 4240 | -22.58 | 0.92 | 0.95 | 6.53 | 0.91 | 1.00 |
| 4241 | -24.27 | 0.83 | 0.88 | 6.74 | 0.84 | 1.03 |
| 4242 | — | — | — | — | — | — |
| 4243 | — | — | — | — | — | — |
| 4244 | -24.22 | 0.84 | 0.89 | 6.77 | 0.85 | 1.03 |
| 4245 | -24.10 | 0.85 | 0.90 | 6.82 | 0.85 | 1.03 |
| 4246 | -23.78 | 0.87 | 0.92 | 6.96 | 0.87 | 1.02 |
| 4247 | -23.41 | 0.88 | 0.93 | 7.14 | 0.88 | 1.01 |
| 4248 | -23.33 | 0.89 | 0.93 | 7.17 | 0.88 | 1.01 |
| 4249 | -23.26 | 0.89 | 0.93 | 7.19 | 0.88 | 1.01 |
| 4250 | -23.18 | 0.89 | 0.93 | 7.21 | 0.88 | 1.01 |
| 4251 | -23.11 | 0.89 | 0.93 | 7.23 | 0.88 | 1.01 |
| 4252 | -23.05 | 0.89 | 0.93 | 7.23 | 0.88 | 1.01 |
| 4253 | -22.99 | 0.89 | 0.92 | 7.22 | 0.88 | 1.01 |
| 4254 | -22.94 | 0.89 | 0.92 | 7.19 | 0.88 | 1.01 |
| 4255 | -22.90 | 0.88 | 0.92 | 7.15 | 0.88 | 1.01 |
| 4256 | -22.88 | 0.88 | 0.91 | 7.08 | 0.88 | 1.01 |
| 4257 | -22.85 | 0.88 | 0.91 | 6.99 | 0.88 | 1.01 |
| 4258 | -24.72 | 0.79 | 0.84 | 6.71 | 0.81 | 1.04 |
| 4259 | — | — | — | — | — | — |
| 4260 | — | — | — | — | — | — |
| 4261 | -24.65 | 0.80 | 0.85 | 6.77 | 0.82 | 1.04 |
| 4262 | -24.51 | 0.81 | 0.86 | 6.89 | 0.82 | 1.04 |
| 4263 | -24.13 | 0.83 | 0.87 | 7.17 | 0.84 | 1.03 |
| 4264 | -23.73 | 0.84 | 0.88 | 7.44 | 0.85 | 1.02 |
| 4265 | -23.65 | 0.85 | 0.88 | 7.48 | 0.85 | 1.02 |
| 4266 | -23.57 | 0.85 | 0.88 | 7.52 | 0.85 | 1.02 |
| 4267 | -23.50 | 0.85 | 0.88 | 7.55 | 0.85 | 1.02 |
| 4268 | -23.43 | 0.85 | 0.88 | 7.57 | 0.85 | 1.02 |
| 4269 | -23.37 | 0.85 | 0.88 | 7.58 | 0.85 | 1.02 |
| 4270 | -23.32 | 0.85 | 0.88 | 7.57 | 0.85 | 1.02 |
| 4271 | -23.27 | 0.85 | 0.88 | 7.54 | 0.85 | 1.02 |
| 4272 | -23.23 | 0.84 | 0.87 | 7.50 | 0.85 | 1.03 |
| 4273 | -23.20 | 0.84 | 0.87 | 7.43 | 0.85 | 1.03 |
| 4274 | -23.20 | 0.84 | 0.86 | 7.33 | 0.85 | 1.03 |
| 4275 | -25.26 | 0.76 | 0.80 | 6.53 | 0.78 | 1.05 |

[Table 565]

| 4276 | – | – | – | – | – | – |
|------|------|------|------|------|------|------|
| 4277 | – | – | – | – | – | – |
| 4278 | -25.18 | 0.76 | 0.80 | 6.62 | 0.79 | 1.05 |
| 4279 | -25.00 | 0.77 | 0.81 | 6.81 | 0.79 | 1.05 |
| 4280 | -24.56 | 0.79 | 0.83 | 7.24 | 0.81 | 1.04 |
| 4281 | -24.13 | 0.80 | 0.84 | 7.61 | 0.82 | 1.04 |
| 4282 | -24.05 | 0.81 | 0.84 | 7.67 | 0.82 | 1.04 |
| 4283 | -23.97 | 0.81 | 0.84 | 7.72 | 0.82 | 1.04 |
| 4284 | -23.90 | 0.81 | 0.84 | 7.75 | 0.82 | 1.04 |
| 4285 | -23.83 | 0.81 | 0.84 | 7.78 | 0.82 | 1.04 |
| 4286 | -23.78 | 0.81 | 0.84 | 7.79 | 0.82 | 1.04 |
| 4287 | -23.72 | 0.81 | 0.83 | 7.79 | 0.82 | 1.04 |
| 4288 | -23.68 | 0.81 | 0.83 | 7.77 | 0.82 | 1.04 |
| 4289 | -23.65 | 0.80 | 0.83 | 7.72 | 0.82 | 1.04 |
| 4290 | -23.61 | 0.80 | 0.82 | 7.65 | 0.82 | 1.04 |
| 4291 | -23.63 | 0.80 | 0.82 | 7.54 | 0.82 | 1.04 |
| 4292 | -25.89 | 0.72 | 0.76 | 6.20 | 0.75 | 1.06 |
| 4293 | – | – | – | – | – | – |
| 4294 | – | – | – | – | – | – |
| 4295 | -25.79 | 0.73 | 0.76 | 6.33 | 0.75 | 1.06 |
| 4296 | -25.59 | 0.73 | 0.77 | 6.59 | 0.76 | 1.06 |
| 4297 | -25.09 | 0.75 | 0.79 | 7.17 | 0.78 | 1.05 |
| 4298 | -24.63 | 0.77 | 0.80 | 7.64 | 0.79 | 1.05 |
| 4299 | -24.54 | 0.77 | 0.80 | 7.71 | 0.79 | 1.05 |
| 4300 | -24.46 | 0.77 | 0.80 | 7.77 | 0.79 | 1.05 |
| 4301 | -24.39 | 0.77 | 0.80 | 7.82 | 0.79 | 1.05 |
| 4302 | -24.32 | 0.77 | 0.80 | 7.86 | 0.79 | 1.05 |
| 4303 | -24.26 | 0.77 | 0.79 | 7.88 | 0.79 | 1.05 |
| 4304 | -24.21 | 0.77 | 0.79 | 7.88 | 0.79 | 1.05 |
| 4305 | -24.17 | 0.77 | 0.79 | 7.86 | 0.79 | 1.05 |
| 4306 | -24.15 | 0.77 | 0.79 | 7.81 | 0.79 | 1.05 |
| 4307 | -24.14 | 0.76 | 0.78 | 7.73 | 0.79 | 1.05 |
| 4308 | -24.14 | 0.76 | 0.78 | 7.63 | 0.78 | 1.05 |
| 4309 | -26.62 | 0.68 | 0.72 | 5.71 | 0.72 | 1.07 |
| 4310 | – | – | – | – | – | – |
| 4311 | – | – | – | – | – | – |
| 4312 | -26.50 | 0.69 | 0.72 | 5.88 | 0.72 | 1.07 |
| 4313 | -26.26 | 0.70 | 0.73 | 6.21 | 0.73 | 1.06 |
| 4314 | -25.71 | 0.72 | 0.75 | 6.94 | 0.74 | 1.06 |
| 4315 | -25.20 | 0.73 | 0.75 | 7.52 | 0.76 | 1.06 |
| 4316 | -25.12 | 0.73 | 0.76 | 7.61 | 0.76 | 1.06 |
| 4317 | -25.03 | 0.73 | 0.76 | 7.68 | 0.76 | 1.06 |
| 4318 | -24.96 | 0.73 | 0.75 | 7.75 | 0.76 | 1.06 |
| 4319 | -24.89 | 0.73 | 0.75 | 7.79 | 0.76 | 1.06 |
| 4320 | -24.83 | 0.73 | 0.75 | 7.82 | 0.76 | 1.06 |
| 4321 | -24.78 | 0.73 | 0.75 | 7.83 | 0.76 | 1.06 |
| 4322 | -24.75 | 0.73 | 0.75 | 7.81 | 0.76 | 1.06 |
| 4323 | -24.72 | 0.73 | 0.74 | 7.76 | 0.76 | 1.06 |
| 4324 | -24.72 | 0.72 | 0.74 | 7.69 | 0.76 | 1.06 |
| 4325 | -24.73 | 0.72 | 0.73 | 7.58 | 0.75 | 1.06 |

[Table 566]

599

| 4326 | -27.45 | 0.65 | 0.68 | 5.07 | 0.68 | 1.07 |
|------|--------|------|------|------|------|------|
| 4327 | — | — | — | — | — | — |
| 4328 | — | — | — | — | — | — |
| 4329 | -27.31 | 0.65 | 0.68 | 5.28 | 0.69 | 1.07 |
| 4330 | -27.05 | 0.66 | 0.69 | 5.67 | 0.70 | 1.07 |
| 4331 | -26.42 | 0.68 | 0.71 | 6.55 | 0.71 | 1.07 |
| 4332 | -25.88 | 0.69 | 0.71 | 7.25 | 0.72 | 1.07 |
| 4333 | -25.78 | 0.69 | 0.71 | 7.35 | 0.73 | 1.07 |
| 4334 | -25.70 | 0.69 | 0.71 | 7.45 | 0.73 | 1.07 |
| 4335 | -25.62 | 0.69 | 0.71 | 7.52 | 0.73 | 1.07 |
| 4336 | -25.55 | 0.69 | 0.71 | 7.58 | 0.73 | 1.07 |
| 4337 | -25.49 | 0.69 | 0.71 | 7.62 | 0.73 | 1.07 |
| 4338 | -25.44 | 0.69 | 0.71 | 7.63 | 0.73 | 1.07 |
| 4339 | -25.41 | 0.69 | 0.71 | 7.62 | 0.73 | 1.07 |
| 4340 | -25.39 | 0.69 | 0.70 | 7.58 | 0.73 | 1.07 |
| 4341 | -25.39 | 0.69 | 0.70 | 7.50 | 0.72 | 1.07 |
| 4342 | -25.41 | 0.68 | 0.69 | 7.39 | 0.72 | 1.07 |
| 4343 | -28.40 | 0.61 | 0.64 | 4.27 | 0.65 | 1.07 |
| 4344 | — | — | — | — | — | — |
| 4345 | — | — | — | — | — | — |
| 4346 | -28.24 | 0.62 | 0.64 | 4.51 | 0.65 | 1.07 |
| 4347 | -27.94 | 0.63 | 0.65 | 4.97 | 0.66 | 1.07 |
| 4348 | -27.24 | 0.64 | 0.67 | 6.01 | 0.68 | 1.07 |
| 4349 | -26.65 | 0.66 | 0.67 | 6.82 | 0.69 | 1.07 |
| 4350 | -26.55 | 0.66 | 0.67 | 6.94 | 0.69 | 1.07 |
| 4351 | -26.46 | 0.66 | 0.67 | 7.05 | 0.69 | 1.07 |
| 4352 | -26.37 | 0.66 | 0.67 | 7.15 | 0.70 | 1.08 |
| 4353 | -26.30 | 0.66 | 0.67 | 7.22 | 0.70 | 1.08 |
| 4354 | -26.24 | 0.66 | 0.67 | 7.26 | 0.70 | 1.08 |
| 4355 | -26.19 | 0.66 | 0.67 | 7.29 | 0.70 | 1.08 |
| 4356 | -26.16 | 0.66 | 0.67 | 7.28 | 0.69 | 1.08 |
| 4357 | -26.15 | 0.65 | 0.66 | 7.24 | 0.69 | 1.08 |
| 4358 | -26.14 | 0.65 | 0.66 | 7.17 | 0.69 | 1.08 |
| 4359 | -26.17 | 0.65 | 0.66 | 7.05 | 0.69 | 1.08 |
| 4360 | -22.46 | 1.14 | 1.24 | 3.48 | 1.05 | 0.94 |
| 4361 | — | — | — | — | — | — |
| 4362 | — | — | — | — | — | — |
| 4363 | -22.57 | 1.15 | 1.25 | 3.23 | 1.06 | 0.94 |
| 4364 | -22.85 | 1.17 | 1.28 | 2.55 | 1.07 | 0.93 |
| 4365 | -23.04 | 1.20 | 1.31 | 1.75 | 1.09 | 0.92 |
| 4366 | -22.87 | 1.23 | 1.33 | 1.40 | 1.11 | 0.92 |
| 4367 | -22.80 | 1.23 | 1.33 | 1.37 | 1.11 | 0.92 |
| 4368 | -22.72 | 1.23 | 1.33 | 1.35 | 1.12 | 0.92 |
| 4369 | -22.63 | 1.23 | 1.33 | 1.34 | 1.12 | 0.92 |
| 4370 | -22.54 | 1.23 | 1.33 | 1.34 | 1.12 | 0.92 |
| 4371 | -22.44 | 1.23 | 1.33 | 1.34 | 1.12 | 0.92 |
| 4372 | -22.33 | 1.23 | 1.33 | 1.34 | 1.12 | 0.93 |
| 4373 | -22.23 | 1.23 | 1.32 | 1.33 | 1.13 | 0.93 |
| 4374 | -22.12 | 1.23 | 1.32 | 1.32 | 1.13 | 0.93 |
| 4375 | -22.02 | 1.23 | 1.31 | 1.30 | 1.13 | 0.93 |

[Table 567]

| 4376 | -21.92 | 1.22 | 1.31 | 1.27 | 1.13 | 0.93 |
|------|--------|------|------|------|------|------|
| 4377 | -22.29 | 1.10 | 1.19 | 4.37 | 1.03 | 0.95 |
| 4378 | − | − | − | − | − | − |
| 4379 | − | − | − | − | − | − |
| 4380 | -22.37 | 1.10 | 1.20 | 4.15 | 1.03 | 0.95 |
| 4381 | -22.56 | 1.13 | 1.22 | 3.58 | 1.04 | 0.94 |
| 4382 | -22.66 | 1.16 | 1.25 | 2.90 | 1.06 | 0.94 |
| 4383 | -22.45 | 1.18 | 1.27 | 2.60 | 1.08 | 0.93 |
| 4384 | -22.38 | 1.18 | 1.27 | 2.57 | 1.08 | 0.93 |
| 4385 | -22.30 | 1.18 | 1.27 | 2.56 | 1.08 | 0.93 |
| 4386 | -22.21 | 1.18 | 1.27 | 2.55 | 1.09 | 0.93 |
| 4387 | -22.12 | 1.18 | 1.27 | 2.54 | 1.09 | 0.93 |
| 4388 | -22.03 | 1.18 | 1.27 | 2.54 | 1.09 | 0.94 |
| 4389 | -21.93 | 1.18 | 1.26 | 2.53 | 1.09 | 0.94 |
| 4390 | -21.84 | 1.18 | 1.26 | 2.52 | 1.09 | 0.94 |
| 4391 | -21.74 | 1.18 | 1.25 | 2.50 | 1.09 | 0.94 |
| 4392 | -21.65 | 1.18 | 1.25 | 2.47 | 1.09 | 0.94 |
| 4393 | -21.56 | 1.17 | 1.24 | 2.43 | 1.09 | 0.94 |
| 4394 | -22.22 | 1.05 | 1.14 | 5.14 | 1.00 | 0.97 |
| 4395 | − | − | − | − | − | − |
| 4396 | − | − | − | − | − | − |
| 4397 | -22.27 | 1.06 | 1.14 | 4.96 | 1.00 | 0.96 |
| 4398 | -22.39 | 1.08 | 1.16 | 4.49 | 1.02 | 0.96 |
| 4399 | -22.39 | 1.11 | 1.19 | 3.93 | 1.03 | 0.95 |
| 4400 | -22.15 | 1.13 | 1.21 | 3.68 | 1.05 | 0.94 |
| 4401 | -22.08 | 1.13 | 1.21 | 3.66 | 1.05 | 0.94 |
| 4402 | -22.00 | 1.13 | 1.21 | 3.65 | 1.05 | 0.94 |
| 4403 | -21.92 | 1.13 | 1.21 | 3.64 | 1.06 | 0.94 |
| 4404 | -21.83 | 1.13 | 1.21 | 3.63 | 1.06 | 0.95 |
| 4405 | -21.74 | 1.13 | 1.21 | 3.62 | 1.06 | 0.95 |
| 4406 | -21.66 | 1.13 | 1.20 | 3.61 | 1.06 | 0.95 |
| 4407 | -21.57 | 1.13 | 1.20 | 3.59 | 1.06 | 0.95 |
| 4408 | -21.48 | 1.13 | 1.20 | 3.56 | 1.06 | 0.95 |
| 4409 | -21.40 | 1.13 | 1.19 | 3.52 | 1.06 | 0.95 |
| 4410 | -21.32 | 1.12 | 1.19 | 3.47 | 1.06 | 0.95 |
| 4411 | -22.24 | 1.01 | 1.09 | 5.79 | 0.97 | 0.98 |
| 4412 | − | − | − | − | − | − |
| 4413 | − | − | − | − | − | − |
| 4414 | -22.27 | 1.02 | 1.09 | 5.65 | 0.98 | 0.98 |
| 4415 | -22.31 | 1.04 | 1.11 | 5.27 | 0.99 | 0.97 |
| 4416 | -22.24 | 1.06 | 1.14 | 4.83 | 1.01 | 0.96 |
| 4417 | -21.97 | 1.08 | 1.15 | 4.64 | 1.02 | 0.96 |
| 4418 | -21.90 | 1.08 | 1.15 | 4.63 | 1.02 | 0.96 |
| 4419 | -21.82 | 1.09 | 1.15 | 4.62 | 1.02 | 0.96 |
| 4420 | -21.74 | 1.09 | 1.15 | 4.61 | 1.03 | 0.96 |
| 4421 | -21.66 | 1.09 | 1.15 | 4.60 | 1.03 | 0.96 |
| 4422 | -21.58 | 1.09 | 1.15 | 4.59 | 1.03 | 0.96 |
| 4423 | -21.49 | 1.09 | 1.15 | 4.57 | 1.03 | 0.96 |
| 4424 | -21.41 | 1.09 | 1.14 | 4.55 | 1.03 | 0.96 |
| 4425 | -21.34 | 1.08 | 1.14 | 4.52 | 1.03 | 0.96 |

[Table 568]

| | | | | | | |
|------|--------|------|------|------|------|------|
| 4426 | -21.26 | 1.08 | 1.14 | 4.47 | 1.03 | 0.96 |
| 4427 | -21.20 | 1.08 | 1.13 | 4.40 | 1.03 | 0.96 |
| 4428 | -22.34 | 0.97 | 1.04 | 6.32 | 0.95 | 0.99 |
| 4429 | – | – | – | – | – | – |
| 4430 | – | – | – | – | – | – |
| 4431 | -22.35 | 0.98 | 1.05 | 6.22 | 0.95 | 0.99 |
| 4432 | -22.33 | 0.99 | 1.06 | 5.93 | 0.96 | 0.98 |
| 4433 | -22.19 | 1.02 | 1.09 | 5.61 | 0.98 | 0.97 |
| 4434 | -21.90 | 1.04 | 1.10 | 5.49 | 0.99 | 0.97 |
| 4435 | -21.82 | 1.04 | 1.10 | 5.48 | 0.99 | 0.97 |
| 4436 | -21.75 | 1.04 | 1.10 | 5.47 | 0.99 | 0.97 |
| 4437 | -21.67 | 1.04 | 1.10 | 5.46 | 0.99 | 0.97 |
| 4438 | -21.59 | 1.04 | 1.10 | 5.46 | 1.00 | 0.97 |
| 4439 | -21.51 | 1.04 | 1.10 | 5.44 | 1.00 | 0.97 |
| 4440 | -21.43 | 1.04 | 1.09 | 5.43 | 1.00 | 0.97 |
| 4441 | -21.36 | 1.04 | 1.09 | 5.40 | 1.00 | 0.97 |
| 4442 | -21.29 | 1.04 | 1.09 | 5.36 | 1.00 | 0.97 |
| 4443 | -21.23 | 1.03 | 1.08 | 5.30 | 1.00 | 0.97 |
| 4444 | -21.17 | 1.03 | 1.08 | 5.23 | 1.00 | 0.98 |
| 4445 | -22.52 | 0.93 | 0.99 | 6.73 | 0.92 | 1.01 |
| 4446 | – | – | – | – | – | – |
| 4447 | – | – | – | – | – | – |
| 4448 | -22.51 | 0.94 | 1.00 | 6.66 | 0.92 | 1.00 |
| 4449 | -22.44 | 0.95 | 1.02 | 6.47 | 0.93 | 1.00 |
| 4450 | -22.24 | 0.98 | 1.04 | 6.27 | 0.95 | 0.99 |
| 4451 | -21.92 | 0.99 | 1.05 | 6.21 | 0.96 | 0.98 |
| 4452 | -21.84 | 0.99 | 1.05 | 6.21 | 0.96 | 0.98 |
| 4453 | -21.77 | 1.00 | 1.05 | 6.21 | 0.96 | 0.98 |
| 4454 | -21.69 | 1.00 | 1.05 | 6.21 | 0.97 | 0.98 |
| 4455 | -21.62 | 1.00 | 1.05 | 6.20 | 0.97 | 0.98 |
| 4456 | -21.54 | 1.00 | 1.05 | 6.19 | 0.97 | 0.98 |
| 4457 | -21.47 | 1.00 | 1.04 | 6.16 | 0.97 | 0.98 |
| 4458 | -21.40 | 1.00 | 1.04 | 6.13 | 0.97 | 0.98 |
| 4459 | -21.34 | 0.99 | 1.04 | 6.09 | 0.97 | 0.99 |
| 4460 | -21.29 | 0.99 | 1.03 | 6.02 | 0.97 | 0.99 |
| 4461 | -21.24 | 0.99 | 1.03 | 5.94 | 0.96 | 0.99 |
| 4462 | -22.78 | 0.89 | 0.95 | 7.02 | 0.89 | 1.02 |
| 4463 | – | – | – | – | – | – |
| 4464 | – | – | – | – | – | – |
| 4465 | -22.75 | 0.90 | 0.96 | 6.98 | 0.90 | 1.02 |
| 4466 | -22.64 | 0.91 | 0.97 | 6.89 | 0.91 | 1.01 |
| 4467 | -22.38 | 0.94 | 0.99 | 6.80 | 0.92 | 1.00 |
| 4468 | -22.03 | 0.95 | 1.00 | 6.82 | 0.93 | 0.99 |
| 4469 | -21.96 | 0.95 | 1.00 | 6.82 | 0.93 | 0.99 |
| 4470 | -21.88 | 0.95 | 1.00 | 6.83 | 0.93 | 0.99 |
| 4471 | -21.81 | 0.95 | 1.00 | 6.83 | 0.94 | 0.99 |
| 4472 | -21.73 | 0.95 | 1.00 | 6.82 | 0.94 | 0.99 |
| 4473 | -21.66 | 0.95 | 1.00 | 6.81 | 0.94 | 0.99 |
| 4474 | -21.60 | 0.95 | 0.99 | 6.79 | 0.94 | 1.00 |
| 4475 | -21.53 | 0.95 | 0.99 | 6.75 | 0.94 | 1.00 |

[Table 569]

| 4476 | -21.48 | 0.95 | 0.99 | 6.70 | 0.94 | 1.00 |
| 4477 | -21.43 | 0.95 | 0.98 | 6.63 | 0.94 | 1.00 |
| 4478 | -21.40 | 0.94 | 0.98 | 6.54 | 0.93 | 1.00 |
| 4479 | -23.12 | 0.85 | 0.91 | 7.17 | 0.86 | 1.03 |
| 4480 | – | – | – | – | – | – |
| 4481 | -23.07 | 0.86 | 0.91 | 7.17 | 0.87 | 1.03 |
| 4482 | -22.92 | 0.87 | 0.93 | 7.17 | 0.88 | 1.02 |
| 4483 | -22.61 | 0.90 | 0.94 | 7.21 | 0.89 | 1.01 |
| 4484 | -22.24 | 0.91 | 0.95 | 7.30 | 0.90 | 1.01 |
| 4485 | -22.16 | 0.91 | 0.95 | 7.31 | 0.90 | 1.01 |
| 4486 | -22.08 | 0.91 | 0.95 | 7.33 | 0.90 | 1.01 |
| 4487 | -22.01 | 0.91 | 0.95 | 7.33 | 0.91 | 1.01 |
| 4488 | -21.94 | 0.91 | 0.95 | 7.33 | 0.91 | 1.01 |
| 4489 | -21.87 | 0.91 | 0.95 | 7.32 | 0.91 | 1.01 |
| 4490 | -21.81 | 0.91 | 0.95 | 7.30 | 0.91 | 1.01 |
| 4491 | -21.75 | 0.91 | 0.94 | 7.26 | 0.91 | 1.01 |
| 4492 | -21.70 | 0.91 | 0.94 | 7.21 | 0.91 | 1.01 |
| 4493 | -21.67 | 0.91 | 0.94 | 7.13 | 0.90 | 1.01 |
| 4494 | -21.64 | 0.90 | 0.93 | 7.03 | 0.90 | 1.01 |
| 4495 | -23.47 | 0.82 | 0.87 | 7.23 | 0.84 | 1.04 |
| 4496 | – | – | – | – | – | – |
| 4497 | -23.41 | 0.83 | 0.88 | 7.26 | 0.84 | 1.04 |
| 4498 | -23.28 | 0.84 | 0.88 | 7.32 | 0.85 | 1.03 |
| 4499 | -22.91 | 0.86 | 0.90 | 7.49 | 0.86 | 1.02 |
| 4500 | -22.52 | 0.87 | 0.91 | 7.66 | 0.87 | 1.02 |
| 4501 | -22.44 | 0.87 | 0.91 | 7.68 | 0.87 | 1.02 |
| 4502 | -22.37 | 0.87 | 0.91 | 7.70 | 0.88 | 1.02 |
| 4503 | -22.29 | 0.87 | 0.91 | 7.72 | 0.88 | 1.02 |
| 4504 | -22.22 | 0.87 | 0.91 | 7.72 | 0.88 | 1.02 |
| 4505 | -22.16 | 0.87 | 0.90 | 7.71 | 0.88 | 1.02 |
| 4506 | -22.10 | 0.87 | 0.90 | 7.69 | 0.88 | 1.02 |
| 4507 | -22.05 | 0.87 | 0.90 | 7.65 | 0.88 | 1.02 |
| 4508 | -22.01 | 0.87 | 0.90 | 7.59 | 0.88 | 1.02 |
| 4509 | -21.98 | 0.86 | 0.89 | 7.51 | 0.87 | 1.02 |
| 4510 | -21.96 | 0.86 | 0.88 | 7.40 | 0.87 | 1.02 |
| 4511 | -23.95 | 0.78 | 0.83 | 7.15 | 0.81 | 1.05 |
| 4512 | – | – | – | – | – | – |
| 4513 | – | – | – | – | – | – |
| 4514 | -23.87 | 0.79 | 0.83 | 7.22 | 0.81 | 1.05 |
| 4515 | -23.72 | 0.80 | 0.84 | 7.34 | 0.82 | 1.04 |
| 4516 | -23.31 | 0.82 | 0.86 | 7.64 | 0.83 | 1.04 |
| 4517 | -22.89 | 0.83 | 0.86 | 7.89 | 0.84 | 1.03 |
| 4518 | -22.81 | 0.83 | 0.86 | 7.93 | 0.84 | 1.03 |
| 4519 | -22.73 | 0.83 | 0.86 | 7.96 | 0.85 | 1.03 |
| 4520 | -22.66 | 0.83 | 0.86 | 7.98 | 0.85 | 1.03 |
| 4521 | -22.59 | 0.83 | 0.86 | 7.99 | 0.85 | 1.03 |
| 4522 | -22.53 | 0.83 | 0.86 | 7.98 | 0.85 | 1.03 |
| 4523 | -22.48 | 0.83 | 0.86 | 7.96 | 0.85 | 1.03 |
| 4524 | -22.43 | 0.83 | 0.86 | 7.92 | 0.85 | 1.03 |
| 4525 | -22.39 | 0.83 | 0.85 | 7.86 | 0.84 | 1.03 |

[Table 570]

| 4526 | -22.37 | 0.82 | 0.85 | 7.77 | 0.84 | 1.03 |
|---|---|---|---|---|---|---|
| 4527 | -22.37 | 0.82 | 0.84 | 7.66 | 0.84 | 1.03 |
| 4528 | -24.52 | 0.75 | 0.79 | 6.94 | 0.78 | 1.06 |
| 4529 | – | – | – | – | – | – |
| 4530 | – | – | – | – | – | – |
| 4531 | -24.42 | 0.75 | 0.79 | 7.03 | 0.78 | 1.06 |
| 4532 | -24.24 | 0.76 | 0.80 | 7.22 | 0.79 | 1.05 |
| 4533 | -23.78 | 0.78 | 0.82 | 7.65 | 0.80 | 1.05 |
| 4534 | -23.34 | 0.79 | 0.82 | 7.99 | 0.81 | 1.04 |
| 4535 | -23.26 | 0.79 | 0.82 | 8.04 | 0.81 | 1.04 |
| 4536 | -23.18 | 0.79 | 0.82 | 8.08 | 0.82 | 1.04 |
| 4537 | -23.11 | 0.79 | 0.82 | 8.11 | 0.82 | 1.04 |
| 4538 | -23.04 | 0.79 | 0.82 | 8.12 | 0.82 | 1.04 |
| 4539 | -22.98 | 0.79 | 0.82 | 8.12 | 0.82 | 1.04 |
| 4540 | -22.93 | 0.79 | 0.82 | 8.10 | 0.82 | 1.04 |
| 4541 | -22.89 | 0.79 | 0.81 | 8.07 | 0.81 | 1.04 |
| 4542 | -22.86 | 0.79 | 0.81 | 8.00 | 0.81 | 1.04 |
| 4543 | -22.84 | 0.79 | 0.80 | 7.91 | 0.81 | 1.04 |
| 4544 | -22.84 | 0.78 | 0.80 | 7.79 | 0.81 | 1.04 |
| 4545 | -25.17 | 0.71 | 0.75 | 6.57 | 0.75 | 1.07 |
| 4546 | – | – | – | – | – | – |
| 4547 | – | – | – | – | – | – |
| 4548 | -25.06 | 0.72 | 0.75 | 6.70 | 0.75 | 1.07 |
| 4549 | -24.85 | 0.73 | 0.76 | 6.96 | 0.76 | 1.06 |
| 4550 | -24.34 | 0.74 | 0.77 | 7.52 | 0.77 | 1.06 |
| 4551 | -23.87 | 0.75 | 0.78 | 7.95 | 0.78 | 1.05 |
| 4552 | -23.79 | 0.76 | 0.78 | 8.02 | 0.78 | 1.05 |
| 4553 | -23.71 | 0.76 | 0.78 | 8.07 | 0.78 | 1.05 |
| 4554 | -23.64 | 0.76 | 0.78 | 8.11 | 0.79 | 1.05 |
| 4555 | -23.57 | 0.76 | 0.78 | 8.13 | 0.79 | 1.05 |
| 4556 | -23.51 | 0.76 | 0.78 | 8.13 | 0.79 | 1.05 |
| 4557 | -23.46 | 0.75 | 0.77 | 8.12 | 0.78 | 1.05 |
| 4558 | -23.43 | 0.75 | 0.77 | 8.08 | 0.78 | 1.05 |
| 4559 | -23.40 | 0.75 | 0.77 | 8.02 | 0.78 | 1.06 |
| 4560 | -23.40 | 0.75 | 0.76 | 7.93 | 0.78 | 1.06 |
| 4561 | -23.40 | 0.74 | 0.76 | 7.80 | 0.78 | 1.06 |
| 4562 | -25.91 | 0.68 | 0.71 | 6.06 | 0.72 | 1.07 |
| 4563 | – | – | – | – | – | – |
| 4564 | – | – | – | – | – | – |
| 4565 | -25.79 | 0.68 | 0.71 | 6.22 | 0.72 | 1.07 |
| 4566 | -25.55 | 0.69 | 0.72 | 6.54 | 0.73 | 1.07 |
| 4567 | -24.99 | 0.71 | 0.73 | 7.24 | 0.74 | 1.07 |
| 4568 | -24.49 | 0.72 | 0.74 | 7.78 | 0.75 | 1.06 |
| 4569 | -24.40 | 0.72 | 0.74 | 7.85 | 0.75 | 1.06 |
| 4570 | -24.32 | 0.72 | 0.74 | 7.92 | 0.75 | 1.06 |
| 4571 | -24.25 | 0.72 | 0.74 | 7.97 | 0.75 | 1.06 |
| 4572 | -24.18 | 0.72 | 0.74 | 8.00 | 0.75 | 1.06 |
| 4573 | -24.13 | 0.72 | 0.74 | 8.01 | 0.75 | 1.06 |
| 4574 | -24.08 | 0.72 | 0.73 | 8.00 | 0.75 | 1.06 |
| 4575 | -24.05 | 0.72 | 0.73 | 7.97 | 0.75 | 1.06 |

[Table 571]

| | | | | | | |
|---|---|---|---|---|---|---|
| 4576 | -24.03 | 0.71 | 0.73 | 7.90 | 0.75 | 1.06 |
| 4577 | -24.03 | 0.71 | 0.72 | 7.81 | 0.75 | 1.06 |
| 4578 | -24.04 | 0.71 | 0.72 | 7.68 | 0.74 | 1.06 |
| 4579 | -21.69 | 1.16 | 1.26 | 3.31 | 1.07 | 0.94 |
| 4580 | – | – | – | – | – | – |
| 4581 | – | – | – | – | – | – |
| 4582 | -21.80 | 1.17 | 1.27 | 3.06 | 1.08 | 0.93 |
| 4583 | -22.05 | 1.19 | 1.30 | 2.39 | 1.09 | 0.93 |
| 4584 | -22.20 | 1.22 | 1.33 | 1.63 | 1.11 | 0.92 |
| 4585 | -21.97 | 1.24 | 1.35 | 1.31 | 1.13 | 0.92 |
| 4586 | -21.88 | 1.25 | 1.35 | 1.28 | 1.13 | 0.92 |
| 4587 | -21.79 | 1.25 | 1.35 | 1.27 | 1.14 | 0.92 |
| 4588 | -21.69 | 1.25 | 1.35 | 1.26 | 1.14 | 0.92 |
| 4589 | -21.58 | 1.25 | 1.34 | 1.26 | 1.14 | 0.92 |
| 4590 | -21.47 | 1.25 | 1.34 | 1.26 | 1.14 | 0.93 |
| 4591 | -21.35 | 1.25 | 1.34 | 1.26 | 1.14 | 0.93 |
| 4592 | -21.24 | 1.25 | 1.34 | 1.25 | 1.15 | 0.93 |
| 4593 | -21.12 | 1.24 | 1.33 | 1.24 | 1.15 | 0.93 |
| 4594 | -21.01 | 1.24 | 1.33 | 1.22 | 1.15 | 0.93 |
| 4595 | -20.89 | 1.24 | 1.32 | 1.18 | 1.15 | 0.93 |
| 4596 | -21.49 | 1.12 | 1.21 | 4.22 | 1.05 | 0.95 |
| 4597 | – | – | – | – | – | – |
| 4598 | – | – | – | – | – | – |
| 4599 | -21.56 | 1.13 | 1.22 | 4.01 | 1.05 | 0.95 |
| 4600 | -21.74 | 1.15 | 1.24 | 3.43 | 1.06 | 0.94 |
| 4601 | -21.79 | 1.18 | 1.27 | 2.77 | 1.08 | 0.93 |
| 4602 | -21.53 | 1.19 | 1.28 | 2.49 | 1.10 | 0.93 |
| 4603 | -21.45 | 1.20 | 1.28 | 2.47 | 1.10 | 0.93 |
| 4604 | -21.36 | 1.20 | 1.28 | 2.45 | 1.10 | 0.93 |
| 4605 | -21.26 | 1.20 | 1.28 | 2.44 | 1.11 | 0.93 |
| 4606 | -21.16 | 1.20 | 1.28 | 2.44 | 1.11 | 0.93 |
| 4607 | -21.06 | 1.20 | 1.28 | 2.43 | 1.11 | 0.94 |
| 4608 | -20.95 | 1.20 | 1.28 | 2.42 | 1.11 | 0.94 |
| 4609 | -20.84 | 1.20 | 1.27 | 2.41 | 1.11 | 0.94 |
| 4610 | -20.74 | 1.19 | 1.27 | 2.39 | 1.11 | 0.94 |
| 4611 | -20.64 | 1.19 | 1.26 | 2.35 | 1.11 | 0.94 |
| 4612 | -20.54 | 1.19 | 1.26 | 2.31 | 1.11 | 0.94 |
| 4613 | -21.38 | 1.08 | 1.16 | 5.02 | 1.02 | 0.96 |
| 4614 | – | – | – | – | – | – |
| 4615 | – | – | – | – | – | – |
| 4616 | -21.43 | 1.08 | 1.17 | 4.84 | 1.02 | 0.96 |
| 4617 | -21.53 | 1.10 | 1.19 | 4.36 | 1.04 | 0.95 |
| 4618 | -21.51 | 1.13 | 1.21 | 3.80 | 1.05 | 0.95 |
| 4619 | -21.23 | 1.15 | 1.23 | 3.56 | 1.07 | 0.94 |
| 4620 | -21.14 | 1.15 | 1.23 | 3.54 | 1.07 | 0.94 |
| 4621 | -21.06 | 1.15 | 1.23 | 3.52 | 1.07 | 0.94 |
| 4622 | -20.96 | 1.15 | 1.23 | 3.51 | 1.08 | 0.94 |
| 4623 | -20.87 | 1.15 | 1.22 | 3.50 | 1.08 | 0.94 |
| 4624 | -20.77 | 1.15 | 1.22 | 3.49 | 1.08 | 0.95 |
| 4625 | -20.67 | 1.15 | 1.22 | 3.48 | 1.08 | 0.95 |

[Table 572]

EP 4 442 787 A1

| | | | | | | |
|---|---|---|---|---|---|---|
| 4626 | -20.57 | 1.15 | 1.22 | 3.45 | 1.08 | 0.95 |
| 4627 | -20.48 | 1.15 | 1.21 | 3.42 | 1.08 | 0.95 |
| 4628 | -20.39 | 1.14 | 1.21 | 3.38 | 1.08 | 0.95 |
| 4629 | -20.30 | 1.14 | 1.20 | 3.32 | 1.08 | 0.95 |
| 4630 | -21.36 | 1.03 | 1.11 | 5.71 | 0.99 | 0.97 |
| 4631 | − | − | − | − | − | − |
| 4632 | − | − | − | − | − | − |
| 4633 | -21.39 | 1.04 | 1.12 | 5.56 | 1.00 | 0.97 |
| 4634 | -21.43 | 1.06 | 1.14 | 5.16 | 1.01 | 0.97 |
| 4635 | -21.34 | 1.08 | 1.16 | 4.71 | 1.02 | 0.96 |
| 4636 | -21.03 | 1.10 | 1.17 | 4.51 | 1.04 | 0.95 |
| 4637 | -20.95 | 1.10 | 1.17 | 4.49 | 1.04 | 0.95 |
| 4638 | -20.87 | 1.10 | 1.17 | 4.48 | 1.04 | 0.95 |
| 4639 | -20.78 | 1.10 | 1.17 | 4.47 | 1.04 | 0.96 |
| 4640 | -20.69 | 1.10 | 1.17 | 4.46 | 1.05 | 0.96 |
| 4641 | -20.59 | 1.10 | 1.17 | 4.44 | 1.05 | 0.96 |
| 4642 | -20.50 | 1.10 | 1.16 | 4.42 | 1.05 | 0.96 |
| 4643 | -20.41 | 1.10 | 1.16 | 4.39 | 1.05 | 0.96 |
| 4644 | -20.33 | 1.10 | 1.16 | 4.35 | 1.05 | 0.96 |
| 4645 | -20.25 | 1.10 | 1.15 | 4.30 | 1.05 | 0.96 |
| 4646 | -20.17 | 1.09 | 1.14 | 4.23 | 1.05 | 0.96 |
| 4647 | -21.43 | 0.99 | 1.06 | 6.29 | 0.97 | 0.99 |
| 4648 | − | − | − | − | − | − |
| 4649 | − | − | − | − | − | − |
| 4650 | -21.44 | 1.00 | 1.07 | 6.17 | 0.97 | 0.98 |
| 4651 | -21.42 | 1.02 | 1.09 | 5.86 | 0.98 | 0.98 |
| 4652 | -21.27 | 1.04 | 1.11 | 5.50 | 1.00 | 0.97 |
| 4653 | -20.94 | 1.06 | 1.12 | 5.35 | 1.01 | 0.97 |
| 4654 | -20.86 | 1.06 | 1.12 | 5.34 | 1.01 | 0.97 |
| 4655 | -20.78 | 1.06 | 1.12 | 5.33 | 1.01 | 0.97 |
| 4656 | -20.69 | 1.06 | 1.12 | 5.32 | 1.01 | 0.97 |
| 4657 | -20.61 | 1.06 | 1.12 | 5.30 | 1.02 | 0.97 |
| 4658 | -20.52 | 1.06 | 1.11 | 5.28 | 1.02 | 0.97 |
| 4659 | -20.43 | 1.06 | 1.11 | 5.26 | 1.02 | 0.97 |
| 4660 | -20.35 | 1.06 | 1.11 | 5.23 | 1.02 | 0.97 |
| 4661 | -20.28 | 1.05 | 1.10 | 5.18 | 1.02 | 0.97 |
| 4662 | -20.20 | 1.05 | 1.10 | 5.12 | 1.02 | 0.97 |
| 4663 | -20.14 | 1.05 | 1.09 | 5.03 | 1.01 | 0.98 |
| 4664 | -21.58 | 0.95 | 1.02 | 6.75 | 0.94 | 1.00 |
| 4665 | − | − | − | − | − | − |
| 4666 | − | − | − | − | − | − |
| 4667 | -21.57 | 0.96 | 1.02 | 6.66 | 0.94 | 1.00 |
| 4668 | -21.51 | 0.97 | 1.04 | 6.43 | 0.95 | 0.99 |
| 4669 | -21.29 | 1.00 | 1.06 | 6.18 | 0.97 | 0.98 |
| 4670 | -20.95 | 1.01 | 1.07 | 6.08 | 0.98 | 0.98 |
| 4671 | -20.87 | 1.01 | 1.07 | 6.07 | 0.98 | 0.98 |
| 4672 | -20.78 | 1.01 | 1.07 | 6.07 | 0.98 | 0.98 |
| 4673 | -20.70 | 1.02 | 1.07 | 6.05 | 0.98 | 0.98 |
| 4674 | -20.62 | 1.02 | 1.06 | 6.04 | 0.98 | 0.98 |
| 4675 | -20.54 | 1.01 | 1.06 | 6.02 | 0.99 | 0.98 |

[Table 573]

606

| 4676 | -20.46 | 1.01 | 1.06 | 5.99 | 0.99 | 0.98 |
|------|--------|------|------|------|------|------|
| 4677 | -20.39 | 1.01 | 1.06 | 5.95 | 0.99 | 0.98 |
| 4678 | -20.32 | 1.01 | 1.05 | 5.90 | 0.99 | 0.98 |
| 4679 | -20.26 | 1.01 | 1.05 | 5.82 | 0.98 | 0.98 |
| 4680 | -20.20 | 1.00 | 1.04 | 5.73 | 0.98 | 0.99 |
| 4681 | -21.81 | 0.91 | 0.97 | 7.09 | 0.91 | 1.01 |
| 4682 | — | — | — | — | — | — |
| 4683 | — | — | — | — | — | — |
| 4684 | -21.78 | 0.92 | 0.98 | 7.03 | 0.92 | 1.01 |
| 4685 | -21.67 | 0.93 | 0.99 | 6.89 | 0.92 | 1.00 |
| 4686 | -21.41 | 0.96 | 1.01 | 6.74 | 0.94 | 0.99 |
| 4687 | -21.04 | 0.97 | 1.02 | 6.70 | 0.95 | 0.99 |
| 4688 | -20.96 | 0.97 | 1.02 | 6.70 | 0.95 | 0.99 |
| 4689 | -20.89 | 0.97 | 1.02 | 6.69 | 0.95 | 0.99 |
| 4690 | -20.81 | 0.97 | 1.02 | 6.68 | 0.95 | 0.99 |
| 4691 | -20.73 | 0.97 | 1.02 | 6.67 | 0.95 | 0.99 |
| 4692 | -20.65 | 0.97 | 1.01 | 6.65 | 0.96 | 0.99 |
| 4693 | -20.58 | 0.97 | 1.01 | 6.61 | 0.96 | 0.99 |
| 4694 | -20.51 | 0.97 | 1.01 | 6.57 | 0.96 | 0.99 |
| 4695 | -20.45 | 0.97 | 1.00 | 6.51 | 0.95 | 1.00 |
| 4696 | -20.40 | 0.96 | 1.00 | 6.43 | 0.95 | 1.00 |
| 4697 | -20.35 | 0.96 | 0.99 | 6.33 | 0.95 | 1.00 |
| 4698 | -22.11 | 0.88 | 0.93 | 7.31 | 0.88 | 1.02 |
| 4699 | — | — | — | — | — | — |
| 4700 | — | — | — | — | — | — |
| 4701 | -22.07 | 0.88 | 0.93 | 7.29 | 0.89 | 1.02 |
| 4702 | -21.92 | 0.90 | 0.95 | 7.22 | 0.90 | 1.01 |
| 4703 | -21.61 | 0.92 | 0.96 | 7.18 | 0.91 | 1.01 |
| 4704 | -21.23 | 0.93 | 0.97 | 7.20 | 0.92 | 1.00 |
| 4705 | -21.15 | 0.93 | 0.97 | 7.20 | 0.92 | 1.00 |
| 4706 | -21.07 | 0.93 | 0.97 | 7.20 | 0.92 | 1.00 |
| 4707 | -20.99 | 0.93 | 0.97 | 7.20 | 0.92 | 1.00 |
| 4708 | -20.92 | 0.93 | 0.97 | 7.18 | 0.92 | 1.00 |
| 4709 | -20.84 | 0.93 | 0.97 | 7.16 | 0.92 | 1.00 |
| 4710 | -20.78 | 0.93 | 0.96 | 7.13 | 0.92 | 1.00 |
| 4711 | -20.72 | 0.93 | 0.96 | 7.08 | 0.92 | 1.01 |
| 4712 | -20.66 | 0.92 | 0.96 | 7.01 | 0.92 | 1.01 |
| 4713 | -20.62 | 0.92 | 0.95 | 6.92 | 0.92 | 1.01 |
| 4714 | -20.58 | 0.92 | 0.95 | 6.81 | 0.92 | 1.01 |
| 4715 | -22.49 | 0.84 | 0.89 | 7.41 | 0.86 | 1.04 |
| 4716 | — | — | — | — | — | — |
| 4717 | — | — | — | — | — | — |
| 4718 | -22.43 | 0.84 | 0.89 | 7.41 | 0.86 | 1.03 |
| 4719 | -22.24 | 0.86 | 0.90 | 7.44 | 0.87 | 1.03 |
| 4720 | -21.89 | 0.88 | 0.92 | 7.50 | 0.88 | 1.02 |
| 4721 | -21.49 | 0.89 | 0.93 | 7.59 | 0.89 | 1.01 |
| 4722 | -21.41 | 0.89 | 0.93 | 7.60 | 0.89 | 1.01 |
| 4723 | -21.33 | 0.89 | 0.93 | 7.60 | 0.89 | 1.01 |
| 4724 | -21.26 | 0.89 | 0.93 | 7.60 | 0.89 | 1.01 |
| 4725 | -21.19 | 0.89 | 0.92 | 7.59 | 0.89 | 1.02 |

[Table 574]

607

EP 4 442 787 A1

| | | | | | | |
|---|---|---|---|---|---|---|
| 4726 | -21.12 | 0.89 | 0.92 | 7.56 | 0.89 | 1.02 |
| 4727 | -21.06 | 0.89 | 0.92 | 7.53 | 0.89 | 1.02 |
| 4728 | -21.00 | 0.89 | 0.92 | 7.47 | 0.89 | 1.02 |
| 4729 | -20.96 | 0.88 | 0.91 | 7.40 | 0.89 | 1.02 |
| 4730 | -20.92 | 0.88 | 0.91 | 7.31 | 0.89 | 1.02 |
| 4731 | -20.90 | 0.88 | 0.90 | 7.19 | 0.89 | 1.02 |
| 4732 | -22.94 | 0.80 | 0.85 | 7.38 | 0.83 | 1.05 |
| 4733 | – | – | – | – | – | – |
| 4734 | -22.87 | 0.81 | 0.85 | 7.41 | 0.83 | 1.04 |
| 4735 | -22.65 | 0.82 | 0.86 | 7.52 | 0.84 | 1.04 |
| 4736 | -22.25 | 0.84 | 0.88 | 7.70 | 0.85 | 1.03 |
| 4737 | -21.84 | 0.85 | 0.88 | 7.85 | 0.86 | 1.03 |
| 4738 | -21.76 | 0.85 | 0.88 | 7.87 | 0.86 | 1.03 |
| 4739 | -21.68 | 0.85 | 0.88 | 7.88 | 0.86 | 1.03 |
| 4740 | -21.61 | 0.85 | 0.88 | 7.88 | 0.86 | 1.03 |
| 4741 | -21.54 | 0.85 | 0.88 | 7.87 | 0.86 | 1.03 |
| 4742 | -21.47 | 0.85 | 0.88 | 7.85 | 0.86 | 1.03 |
| 4743 | -21.42 | 0.85 | 0.87 | 7.81 | 0.86 | 1.03 |
| 4744 | -21.37 | 0.85 | 0.87 | 7.76 | 0.86 | 1.03 |
| 4745 | -21.33 | 0.84 | 0.87 | 7.68 | 0.86 | 1.03 |
| 4746 | -21.30 | 0.84 | 0.86 | 7.58 | 0.86 | 1.03 |
| 4747 | -21.29 | 0.84 | 0.86 | 7.45 | 0.86 | 1.03 |
| 4748 | -23.39 | 0.77 | 0.81 | 7.28 | 0.80 | 1.05 |
| 4749 | – | – | – | – | – | – |
| 4750 | -23.31 | 0.78 | 0.81 | 7.35 | 0.80 | 1.05 |
| 4751 | -23.13 | 0.78 | 0.82 | 7.48 | 0.81 | 1.05 |
| 4752 | -22.70 | 0.80 | 0.83 | 7.77 | 0.82 | 1.04 |
| 4753 | -22.26 | 0.81 | 0.84 | 7.99 | 0.83 | 1.04 |
| 4754 | -22.18 | 0.81 | 0.84 | 8.02 | 0.83 | 1.04 |
| 4755 | -22.11 | 0.81 | 0.84 | 8.04 | 0.83 | 1.04 |
| 4756 | -22.03 | 0.81 | 0.84 | 8.05 | 0.83 | 1.04 |
| 4757 | -21.97 | 0.81 | 0.84 | 8.04 | 0.83 | 1.04 |
| 4758 | -21.91 | 0.81 | 0.84 | 8.02 | 0.83 | 1.04 |
| 4759 | -21.85 | 0.81 | 0.83 | 7.98 | 0.83 | 1.04 |
| 4760 | -21.81 | 0.81 | 0.83 | 7.93 | 0.83 | 1.04 |
| 4761 | -21.78 | 0.81 | 0.82 | 7.84 | 0.83 | 1.04 |
| 4762 | -21.76 | 0.80 | 0.82 | 7.74 | 0.83 | 1.04 |
| 4763 | -21.76 | 0.80 | 0.81 | 7.60 | 0.82 | 1.04 |
| 4764 | -23.99 | 0.74 | 0.77 | 7.02 | 0.77 | 1.06 |
| 4765 | – | – | – | – | – | – |
| 4766 | – | – | – | – | – | – |
| 4767 | -23.90 | 0.74 | 0.77 | 7.11 | 0.77 | 1.06 |
| 4768 | -23.70 | 0.75 | 0.78 | 7.30 | 0.78 | 1.06 |
| 4769 | -23.22 | 0.76 | 0.79 | 7.71 | 0.79 | 1.05 |
| 4770 | -22.77 | 0.77 | 0.80 | 8.01 | 0.80 | 1.05 |
| 4771 | -22.69 | 0.77 | 0.80 | 8.04 | 0.80 | 1.05 |
| 4772 | -22.61 | 0.77 | 0.80 | 8.07 | 0.80 | 1.05 |
| 4773 | -22.54 | 0.77 | 0.80 | 8.09 | 0.80 | 1.05 |
| 4774 | -22.48 | 0.77 | 0.80 | 8.08 | 0.80 | 1.05 |
| 4775 | -22.42 | 0.77 | 0.79 | 8.07 | 0.80 | 1.05 |

[Table 575]

608

| 4776 | -22.37 | 0.77 | 0.79 | 8.03 | 0.80 | 1.05 |
|---|---|---|---|---|---|---|
| 4777 | -22.33 | 0.77 | 0.79 | 7.97 | 0.80 | 1.05 |
| 4778 | -22.31 | 0.77 | 0.78 | 7.89 | 0.80 | 1.05 |
| 4779 | -22.30 | 0.77 | 0.78 | 7.77 | 0.80 | 1.05 |
| 4780 | -22.30 | 0.76 | 0.77 | 7.63 | 0.79 | 1.05 |
| 4781 | -21.01 | 1.18 | 1.28 | 3.02 | 1.09 | 0.93 |
| 4782 | – | – | – | – | – | – |
| 4783 | -21.11 | 1.19 | 1.29 | 2.77 | 1.09 | 0.93 |
| 4784 | -21.34 | 1.21 | 1.31 | 2.14 | 1.11 | 0.93 |
| 4785 | -21.40 | 1.24 | 1.34 | 1.45 | 1.13 | 0.92 |
| 4786 | -21.08 | 1.25 | 1.35 | 1.19 | 1.15 | 0.92 |
| 4787 | -20.98 | 1.26 | 1.36 | **1.18** | 1.15 | 0.92 |
| 4788 | -20.87 | 1.26 | 1.36 | 1.17 | 1.15 | 0.92 |
| 4789 | -20.75 | 1.26 | 1.35 | 1.17 | 1.15 | 0.93 |
| 4790 | -20.63 | 1.26 | 1.35 | 1.17 | 1.16 | 0.93 |
| 4791 | -20.50 | 1.26 | 1.35 | 1.18 | 1.16 | 0.93 |
| 4792 | -20.37 | 1.26 | 1.35 | 1.18 | 1.16 | 0.93 |
| 4793 | -20.24 | 1.25 | 1.34 | 1.17 | 1.16 | 0.93 |
| 4794 | -20.11 | 1.25 | 1.34 | 1.16 | 1.16 | 0.93 |
| 4795 | -19.98 | 1.25 | 1.33 | 1.13 | 1.16 | 0.94 |
| 4796 | -19.86 | 1.24 | 1.32 | 1.09 | 1.16 | 0.94 |
| 4797 | -20.78 | 1.14 | 1.23 | 3.94 | 1.06 | 0.95 |
| 4798 | – | – | – | – | – | – |
| 4799 | – | – | – | – | – | – |
| 4800 | -20.85 | 1.14 | 1.24 | 3.73 | 1.07 | 0.94 |
| 4801 | -21.00 | 1.16 | 1.26 | 3.17 | 1.08 | 0.94 |
| 4802 | -20.99 | 1.19 | 1.28 | 2.56 | 1.10 | 0.93 |
| 4803 | -20.65 | 1.21 | 1.29 | 2.33 | 1.12 | 0.93 |
| 4804 | -20.54 | 1.21 | 1.30 | 2.32 | 1.12 | 0.93 |
| 4805 | -20.45 | 1.21 | 1.29 | 2.31 | 1.12 | 0.93 |
| 4806 | -20.34 | 1.21 | 1.29 | 2.30 | 1.12 | 0.94 |
| 4807 | -20.22 | 1.21 | 1.29 | 2.30 | 1.12 | 0.94 |
| 4808 | -20.11 | 1.21 | 1.29 | 2.30 | 1.13 | 0.94 |
| 4809 | -19.99 | 1.21 | 1.29 | 2.29 | 1.13 | 0.94 |
| 4810 | -19.87 | 1.21 | 1.28 | 2.27 | 1.13 | 0.94 |
| 4811 | -19.75 | 1.20 | 1.28 | 2.25 | 1.13 | 0.94 |
| 4812 | -19.63 | 1.20 | 1.27 | 2.21 | 1.13 | 0.94 |
| 4813 | -19.52 | 1.20 | 1.26 | 2.16 | 1.13 | 0.95 |
| 4814 | -20.64 | 1.09 | 1.18 | 4.76 | 1.03 | 0.96 |
| 4815 | – | – | – | – | – | – |
| 4816 | – | – | – | – | – | – |
| 4817 | -20.69 | 1.10 | 1.18 | 4.57 | 1.04 | 0.96 |
| 4818 | -20.77 | 1.12 | 1.20 | 4.10 | 1.05 | 0.95 |
| 4819 | -20.70 | 1.14 | 1.23 | 3.57 | 1.07 | 0.94 |
| 4820 | -20.35 | 1.16 | 1.24 | 3.36 | 1.08 | 0.94 |
| 4821 | -20.25 | 1.16 | 1.24 | 3.35 | 1.09 | 0.94 |
| 4822 | -20.15 | 1.16 | 1.24 | 3.34 | 1.09 | 0.94 |
| 4823 | -20.05 | 1.16 | 1.24 | 3.33 | 1.09 | 0.95 |
| 4824 | -19.94 | 1.16 | 1.23 | 3.32 | 1.09 | 0.95 |
| 4825 | -19.83 | 1.16 | 1.23 | 3.31 | 1.09 | 0.95 |

[Table 576]

| 4826 | -19.72 | 1.16 | 1.23 | 3.29 | 1.09 | 0.95 |
|---|---|---|---|---|---|---|
| 4827 | -19.61 | 1.16 | 1.22 | 3.27 | 1.10 | 0.95 |
| 4828 | -19.51 | 1.16 | 1.22 | 3.24 | 1.10 | 0.95 |
| 4829 | -19.40 | 1.15 | 1.21 | 3.19 | 1.10 | 0.95 |
| 4830 | -19.30 | 1.15 | 1.21 | 3.13 | 1.09 | 0.96 |
| 4831 | -20.60 | 1.05 | 1.13 | 5.46 | 1.01 | 0.97 |
| 4832 | — | — | — | — | — | — |
| 4833 | — | — | — | — | — | — |
| 4834 | -20.62 | 1.06 | 1.13 | 5.31 | 1.01 | 0.97 |
| 4835 | -20.65 | 1.08 | 1.15 | 4.91 | 1.02 | 0.96 |
| 4836 | -20.51 | 1.10 | 1.17 | 4.47 | 1.04 | 0.96 |
| 4837 | -20.15 | 1.11 | 1.18 | 4.29 | 1.05 | 0.95 |
| 4838 | -20.05 | 1.11 | 1.18 | 4.27 | 1.06 | 0.95 |
| 4839 | -19.97 | 1.12 | 1.18 | 4.26 | 1.06 | 0.96 |
| 4840 | -19.87 | 1.12 | 1.18 | 4.25 | 1.06 | 0.96 |
| 4841 | -19.77 | 1.12 | 1.18 | 4.24 | 1.06 | 0.96 |
| 4842 | -19.66 | 1.12 | 1.18 | 4.22 | 1.06 | 0.96 |
| 4843 | -19.56 | 1.11 | 1.17 | 4.20 | 1.06 | 0.96 |
| 4844 | -19.46 | 1.11 | 1.17 | 4.17 | 1.06 | 0.96 |
| 4845 | -19.37 | 1.11 | 1.16 | 4.12 | 1.06 | 0.96 |
| 4846 | -19.28 | 1.11 | 1.16 | 4.06 | 1.06 | 0.96 |
| 4847 | -19.19 | 1.10 | 1.15 | 3.99 | 1.06 | 0.97 |
| 4848 | -20.65 | 1.01 | 1.08 | 6.06 | 0.98 | 0.98 |
| 4849 | — | — | — | — | — | — |
| 4850 | — | — | — | — | — | — |
| 4851 | -20.65 | 1.02 | 1.09 | 5.94 | 0.98 | 0.98 |
| 4852 | -20.62 | 1.03 | 1.10 | 5.61 | 1.00 | 0.97 |
| 4853 | -20.43 | 1.06 | 1.12 | 5.25 | 1.01 | 0.97 |
| 4854 | -20.06 | 1.07 | 1.13 | 5.11 | 1.02 | 0.97 |
| 4855 | -19.97 | 1.07 | 1.13 | 5.09 | 1.03 | 0.97 |
| 4856 | -19.88 | 1.07 | 1.13 | 5.08 | 1.03 | 0.97 |
| 4857 | -19.79 | 1.07 | 1.13 | 5.07 | 1.03 | 0.97 |
| 4858 | -19.69 | 1.07 | 1.13 | 5.05 | 1.03 | 0.97 |
| 4859 | -19.59 | 1.07 | 1.12 | 5.03 | 1.03 | 0.97 |
| 4860 | -19.50 | 1.07 | 1.12 | 5.00 | 1.03 | 0.97 |
| 4861 | -19.41 | 1.07 | 1.12 | 4.96 | 1.03 | 0.97 |
| 4862 | -19.33 | 1.06 | 1.11 | 4.91 | 1.03 | 0.97 |
| 4863 | -19.25 | 1.06 | 1.11 | 4.84 | 1.03 | 0.97 |
| 4864 | -19.17 | 1.06 | 1.10 | 4.75 | 1.03 | 0.98 |
| 4865 | -20.77 | 0.97 | 1.03 | 6.55 | 0.95 | 0.99 |
| 4866 | — | — | — | — | — | — |
| 4867 | — | — | — | — | — | — |
| 4868 | -20.76 | 0.98 | 1.04 | 6.45 | 0.96 | 0.99 |
| 4869 | -20.69 | 0.99 | 1.05 | 6.20 | 0.97 | 0.99 |
| 4870 | -20.45 | 1.01 | 1.07 | 5.93 | 0.98 | 0.98 |
| 4871 | -20.07 | 1.03 | 1.08 | 5.82 | 0.99 | 0.98 |
| 4872 | -19.98 | 1.03 | 1.08 | 5.81 | 1.00 | 0.98 |
| 4873 | -19.89 | 1.03 | 1.08 | 5.79 | 1.00 | 0.98 |
| 4874 | -19.80 | 1.03 | 1.08 | 5.78 | 1.00 | 0.98 |
| 4875 | -19.71 | 1.03 | 1.08 | 5.76 | 1.00 | 0.98 |

[Table 577]

| 4876 | -19.62 | 1.03 | 1.07 | 5.73 | 1.00 | 0.98 |
|------|--------|------|------|------|------|------|
| 4877 | -19.53 | 1.03 | 1.07 | 5.70 | 1.00 | 0.98 |
| 4878 | -19.45 | 1.02 | 1.07 | 5.65 | 1.00 | 0.98 |
| 4879 | -19.38 | 1.02 | 1.06 | 5.59 | 1.00 | 0.98 |
| 4880 | -19.31 | 1.02 | 1.06 | 5.51 | 1.00 | 0.98 |
| 4881 | -19.24 | 1.01 | 1.05 | 5.41 | 1.00 | 0.99 |
| 4882 | -20.97 | 0.93 | 0.99 | 6.93 | 0.93 | 1.01 |
| 4883 | – | – | – | – | – | – |
| 4884 | – | – | – | – | – | – |
| 4885 | -20.94 | 0.94 | 0.99 | 6.86 | 0.93 | 1.00 |
| 4886 | -20.83 | 0.95 | 1.01 | 6.68 | 0.94 | 1.00 |
| 4887 | -20.55 | 0.97 | 1.02 | 6.49 | 0.95 | 0.99 |
| 4888 | -20.15 | 0.98 | 1.03 | 6.42 | 0.96 | 0.99 |
| 4889 | -20.07 | 0.98 | 1.03 | 6.41 | 0.97 | 0.99 |
| 4890 | -19.98 | 0.99 | 1.03 | 6.40 | 0.97 | 0.99 |
| 4891 | -19.90 | 0.99 | 1.03 | 6.39 | 0.97 | 0.99 |
| 4892 | -19.81 | 0.99 | 1.03 | 6.37 | 0.97 | 0.99 |
| 4893 | -19.73 | 0.98 | 1.03 | 6.34 | 0.97 | 0.99 |
| 4894 | -19.65 | 0.98 | 1.02 | 6.30 | 0.97 | 0.99 |
| 4895 | -19.58 | 0.98 | 1.02 | 6.24 | 0.97 | 0.99 |
| 4896 | -19.51 | 0.98 | 1.01 | 6.17 | 0.97 | 0.99 |
| 4897 | -19.45 | 0.97 | 1.01 | 6.08 | 0.97 | 1.00 |
| 4898 | -19.40 | 0.97 | 1.00 | 5.97 | 0.96 | 1.00 |
| 4899 | -21.25 | 0.89 | 0.95 | 7.19 | 0.90 | 1.02 |
| 4900 | – | – | – | – | – | – |
| 4901 | – | – | – | – | – | – |
| 4902 | -21.20 | 0.90 | 0.95 | 7.15 | 0.90 | 1.01 |
| 4903 | -21.06 | 0.91 | 0.96 | 7.04 | 0.91 | 1.01 |
| 4904 | -20.73 | 0.93 | 0.98 | 6.94 | 0.92 | 1.00 |
| 4905 | -20.33 | 0.94 | 0.98 | 6.92 | 0.93 | 1.00 |
| 4906 | -20.25 | 0.94 | 0.98 | 6.91 | 0.94 | 1.00 |
| 4907 | -20.16 | 0.94 | 0.98 | 6.90 | 0.94 | 1.00 |
| 4908 | -20.08 | 0.94 | 0.98 | 6.89 | 0.94 | 1.00 |
| 4909 | -20.00 | 0.94 | 0.98 | 6.87 | 0.94 | 1.00 |
| 4910 | -19.92 | 0.94 | 0.98 | 6.83 | 0.94 | 1.00 |
| 4911 | -19.85 | 0.94 | 0.97 | 6.79 | 0.94 | 1.00 |
| 4912 | -19.78 | 0.94 | 0.97 | 6.73 | 0.94 | 1.00 |
| 4913 | -19.72 | 0.94 | 0.97 | 6.65 | 0.94 | 1.00 |
| 4914 | -19.68 | 0.93 | 0.96 | 6.55 | 0.93 | 1.01 |
| 4915 | -19.63 | 0.93 | 0.95 | 6.43 | 0.93 | 1.01 |
| 4916 | -21.60 | 0.86 | 0.90 | 7.34 | 0.87 | 1.03 |
| 4917 | – | – | – | – | – | – |
| 4918 | – | – | – | – | – | – |
| 4919 | -21.54 | 0.86 | 0.91 | 7.32 | 0.87 | 1.03 |
| 4920 | -21.36 | 0.87 | 0.92 | 7.29 | 0.88 | 1.02 |
| 4921 | -21.00 | 0.89 | 0.93 | 7.24 | 0.89 | 1.01 |
| 4922 | -20.59 | 0.90 | 0.94 | 7.30 | 0.90 | 1.01 |
| 4923 | -20.51 | 0.90 | 0.94 | 7.30 | 0.91 | 1.01 |
| 4924 | -20.42 | 0.90 | 0.94 | 7.30 | 0.91 | 1.01 |
| 4925 | -20.34 | 0.90 | 0.94 | 7.28 | 0.91 | 1.01 |

[Table 578]

| 4926 | -20.27 | 0.90 | 0.94 | 7.26 | 0.91 | 1.01 |
|---|---|---|---|---|---|---|
| 4927 | -20.20 | 0.90 | 0.93 | 7.22 | 0.91 | 1.01 |
| 4928 | -20.13 | 0.90 | 0.93 | 7.17 | 0.91 | 1.01 |
| 4929 | -20.07 | 0.90 | 0.93 | 7.11 | 0.91 | 1.01 |
| 4930 | -20.02 | 0.90 | 0.92 | 7.02 | 0.91 | 1.02 |
| 4931 | -19.98 | 0.89 | 0.92 | 6.91 | 0.90 | 1.02 |
| 4932 | -19.95 | 0.89 | 0.91 | 6.78 | 0.90 | 1.02 |
| 4933 | -22.02 | 0.82 | 0.86 | 7.37 | 0.84 | 1.04 |
| 4934 | – | – | – | – | – | – |
| 4935 | – | – | – | – | – | – |
| 4936 | -21.96 | 0.82 | 0.87 | 7.38 | 0.84 | 1.04 |
| 4937 | -21.74 | 0.84 | 0.88 | 7.42 | 0.85 | 1.03 |
| 4938 | -21.35 | 0.85 | 0.89 | 7.50 | 0.87 | 1.02 |
| 4939 | -20.92 | 0.86 | 0.90 | 7.58 | 0.87 | 1.02 |
| 4940 | -20.84 | 0.86 | 0.90 | 7.58 | 0.88 | 1.02 |
| 4941 | -20.76 | 0.86 | 0.89 | 7.58 | 0.88 | 1.02 |
| 4942 | -20.69 | 0.86 | 0.89 | 7.56 | 0.88 | 1.02 |
| 4943 | -20.61 | 0.86 | 0.89 | 7.54 | 0.88 | 1.02 |
| 4944 | -20.55 | 0.86 | 0.89 | 7.50 | 0.88 | 1.02 |
| 4945 | -20.49 | 0.86 | 0.89 | 7.45 | 0.88 | 1.02 |
| 4946 | -20.43 | 0.86 | 0.88 | 7.38 | 0.88 | 1.02 |
| 4947 | -20.39 | 0.86 | 0.88 | 7.28 | 0.87 | 1.03 |
| 4948 | -20.36 | 0.85 | 0.87 | 7.17 | 0.87 | 1.03 |
| 4949 | -20.34 | 0.85 | 0.87 | 7.02 | 0.87 | 1.03 |
| 4950 | -22.53 | 0.78 | 0.82 | 7.27 | 0.81 | 1.05 |
| 4951 | – | – | – | – | – | – |
| 4952 | -22.45 | 0.79 | 0.83 | 7.31 | 0.81 | 1.04 |
| 4953 | -22.20 | 0.80 | 0.84 | 7.43 | 0.82 | 1.04 |
| 4954 | -21.77 | 0.82 | 0.85 | 7.61 | 0.84 | 1.03 |
| 4955 | -21.34 | 0.82 | 0.85 | 7.73 | 0.84 | 1.03 |
| 4956 | -21.26 | 0.83 | 0.85 | 7.74 | 0.84 | 1.03 |
| 4957 | -21.18 | 0.83 | 0.85 | 7.74 | 0.85 | 1.03 |
| 4958 | -21.11 | 0.83 | 0.85 | 7.73 | 0.85 | 1.03 |
| 4959 | -21.04 | 0.83 | 0.85 | 7.71 | 0.85 | 1.03 |
| 4960 | -20.98 | 0.82 | 0.85 | 7.67 | 0.85 | 1.03 |
| 4961 | -20.92 | 0.82 | 0.84 | 7.61 | 0.85 | 1.03 |
| 4962 | -20.88 | 0.82 | 0.84 | 7.54 | 0.84 | 1.03 |
| 4963 | -20.84 | 0.82 | 0.83 | 7.44 | 0.84 | 1.04 |
| 4964 | -20.82 | 0.81 | 0.83 | 7.31 | 0.84 | 1.04 |
| 4965 | -20.81 | 0.81 | 0.82 | 7.16 | 0.84 | 1.04 |
| 4966 | -20.76 | 1.19 | 1.29 | 2.87 | 1.10 | 0.93 |
| 4967 | – | – | – | – | – | – |
| 4968 | -20.85 | 1.19 | 1.30 | 2.64 | 1.10 | 0.93 |
| 4969 | -21.06 | 1.21 | 1.32 | 2.02 | 1.11 | 0.93 |
| 4970 | -21.08 | 1.24 | 1.35 | 1.37 | 1.14 | 0.92 |
| 4971 | -20.71 | 1.26 | 1.36 | 1.15 | 1.15 | 0.92 |
| 4972 | -20.61 | 1.26 | 1.36 | 1.14 | 1.16 | 0.92 |
| 4973 | -20.49 | 1.26 | 1.36 | 1.14 | 1.16 | 0.93 |
| 4974 | -20.37 | 1.26 | 1.36 | 1.14 | 1.16 | 0.93 |
| 4975 | -20.24 | 1.26 | 1.35 | 1.15 | 1.16 | 0.93 |

[Table 579]

| 4976 | -20.10 | 1.26 | 1.35 | 1.15 | 1.16 | 0.93 |
|------|--------|------|------|------|------|------|
| 4977 | -19.97 | 1.26 | 1.35 | 1.15 | 1.17 | 0.93 |
| 4978 | -19.83 | 1.26 | 1.34 | 1.15 | 1.17 | 0.93 |
| 4979 | -19.70 | 1.25 | 1.34 | 1.13 | 1.17 | 0.93 |
| 4980 | -19.56 | 1.25 | 1.33 | 1.11 | 1.17 | 0.94 |
| 4981 | -19.43 | 1.25 | 1.32 | 1.07 | 1.17 | 0.94 |
| 4982 | -20.52 | 1.14 | 1.23 | 3.80 | 1.07 | 0.94 |
| 4983 | — | — | — | — | — | — |
| 4984 | -20.58 | 1.15 | 1.24 | 3.59 | 1.07 | 0.94 |
| 4985 | -20.72 | 1.17 | 1.26 | 3.05 | 1.09 | 0.94 |
| 4986 | -20.67 | 1.19 | 1.29 | 2.47 | 1.11 | 0.93 |
| 4987 | -20.30 | 1.21 | 1.30 | 2.27 | 1.12 | 0.93 |
| 4988 | -20.19 | 1.21 | 1.30 | 2.26 | 1.12 | 0.93 |
| 4989 | -20.08 | 1.21 | 1.30 | 2.25 | 1.13 | 0.94 |
| 4990 | -19.97 | 1.21 | 1.30 | 2.25 | 1.13 | 0.94 |
| 4991 | -19.85 | 1.21 | 1.29 | 2.25 | 1.13 | 0.94 |
| 4992 | -19.72 | 1.21 | 1.29 | 2.24 | 1.13 | 0.94 |
| 4993 | -19.60 | 1.21 | 1.29 | 2.24 | 1.13 | 0.94 |
| 4994 | -19.47 | 1.21 | 1.28 | 2.22 | 1.13 | 0.94 |
| 4995 | -19.35 | 1.21 | 1.28 | 2.20 | 1.13 | 0.94 |
| 4996 | -19.23 | 1.20 | 1.27 | 2.16 | 1.13 | 0.95 |
| 4997 | -19.11 | 1.20 | 1.27 | 2.11 | 1.13 | 0.95 |
| 4998 | -20.37 | 1.10 | 1.18 | 4.62 | 1.04 | 0.96 |
| 4999 | — | — | — | — | — | — |
| 5000 | — | — | — | — | — | — |
| 5001 | -20.42 | 1.11 | 1.19 | 4.44 | 1.04 | 0.95 |
| 5002 | -20.49 | 1.12 | 1.21 | 3.97 | 1.06 | 0.95 |
| 5003 | -20.38 | 1.15 | 1.23 | 3.47 | 1.08 | 0.94 |
| 5004 | -20.00 | 1.16 | 1.24 | 3.28 | 1.09 | 0.94 |
| 5005 | -19.90 | 1.16 | 1.24 | 3.27 | 1.09 | 0.94 |
| 5006 | -19.79 | 1.17 | 1.24 | 3.26 | 1.09 | 0.94 |
| 5007 | -19.68 | 1.17 | 1.24 | 3.25 | 1.10 | 0.95 |
| 5008 | -19.57 | 1.17 | 1.24 | 3.25 | 1.10 | 0.95 |
| 5009 | -19.46 | 1.16 | 1.23 | 3.24 | 1.10 | 0.95 |
| 5010 | -19.34 | 1.16 | 1.23 | 3.22 | 1.10 | 0.95 |
| 5011 | -19.23 | 1.16 | 1.23 | 3.20 | 1.10 | 0.95 |
| 5012 | -19.12 | 1.16 | 1.22 | 3.16 | 1.10 | 0.95 |
| 5013 | -19.01 | 1.15 | 1.22 | 3.11 | 1.10 | 0.95 |
| 5014 | -18.91 | 1.15 | 1.21 | 3.05 | 1.10 | 0.96 |
| 5015 | -20.32 | 1.06 | 1.13 | 5.33 | 1.01 | 0.97 |
| 5016 | — | — | — | — | — | — |
| 5017 | — | — | — | — | — | — |
| 5018 | -20.34 | 1.06 | 1.14 | 5.17 | 1.02 | 0.97 |
| 5019 | -20.36 | 1.08 | 1.16 | 4.78 | 1.03 | 0.96 |
| 5020 | -20.20 | 1.10 | 1.18 | 4.35 | 1.05 | 0.96 |
| 5021 | -19.81 | 1.12 | 1.19 | 4.19 | 1.06 | 0.95 |
| 5022 | -19.71 | 1.12 | 1.19 | 4.17 | 1.06 | 0.95 |
| 5023 | -19.61 | 1.12 | 1.18 | 4.16 | 1.06 | 0.96 |
| 5024 | -19.51 | 1.12 | 1.18 | 4.15 | 1.06 | 0.96 |
| 5025 | -19.41 | 1.12 | 1.18 | 4.14 | 1.07 | 0.96 |

[Table 580]

| 5026 | -19.30 | 1.12 | 1.18 | 4.12 | 1.07 | 0.96 |
|------|--------|------|------|------|------|------|
| 5027 | -19.19 | 1.12 | 1.18 | 4.10 | 1.07 | 0.96 |
| 5028 | -19.09 | 1.11 | 1.17 | 4.07 | 1.07 | 0.96 |
| 5029 | -18.99 | 1.11 | 1.17 | 4.02 | 1.07 | 0.96 |
| 5030 | -18.89 | 1.11 | 1.16 | 3.96 | 1.07 | 0.96 |
| 5031 | -18.80 | 1.10 | 1.15 | 3.88 | 1.07 | 0.97 |
| 5032 | -20.36 | 1.02 | 1.09 | 5.93 | 0.99 | 0.98 |
| 5033 | — | — | — | — | — | — |
| 5034 | — | — | — | — | — | — |
| 5035 | -20.36 | 1.02 | 1.09 | 5.80 | 0.99 | 0.98 |
| 5036 | -20.33 | 1.04 | 1.11 | 5.48 | 1.00 | 0.97 |
| 5037 | -20.12 | 1.06 | 1.13 | 5.13 | 1.02 | 0.97 |
| 5038 | -19.72 | 1.07 | 1.13 | 4.99 | 1.03 | 0.97 |
| 5039 | -19.63 | 1.07 | 1.13 | 4.98 | 1.03 | 0.97 |
| 5040 | -19.53 | 1.07 | 1.13 | 4.97 | 1.03 | 0.97 |
| 5041 | -19.44 | 1.07 | 1.13 | 4.95 | 1.03 | 0.97 |
| 5042 | -19.34 | 1.07 | 1.13 | 4.93 | 1.04 | 0.97 |
| 5043 | -19.24 | 1.07 | 1.13 | 4.91 | 1.04 | 0.97 |
| 5044 | -19.14 | 1.07 | 1.12 | 4.88 | 1.04 | 0.97 |
| 5045 | -19.05 | 1.07 | 1.12 | 4.84 | 1.04 | 0.97 |
| 5046 | -18.96 | 1.07 | 1.11 | 4.78 | 1.04 | 0.97 |
| 5047 | -18.87 | 1.06 | 1.11 | 4.71 | 1.03 | 0.97 |
| 5048 | -18.79 | 1.06 | 1.10 | 4.62 | 1.03 | 0.98 |
| 5049 | -20.47 | 0.98 | 1.04 | 6.43 | 0.96 | 0.99 |
| 5050 | — | — | — | — | — | — |
| 5051 | — | — | — | — | — | — |
| 5052 | -20.46 | 0.98 | 1.04 | 6.33 | 0.96 | 0.99 |
| 5053 | -20.38 | 1.00 | 1.06 | 6.07 | 0.97 | 0.98 |
| 5054 | -20.13 | 1.02 | 1.08 | 5.80 | 0.99 | 0.98 |
| 5055 | -19.73 | 1.03 | 1.08 | 5.69 | 1.00 | 0.98 |
| 5056 | -19.64 | 1.03 | 1.08 | 5.68 | 1.00 | 0.98 |
| 5057 | -19.55 | 1.03 | 1.08 | 5.66 | 1.00 | 0.98 |
| 5058 | -19.45 | 1.03 | 1.08 | 5.65 | 1.00 | 0.98 |
| 5059 | -19.36 | 1.03 | 1.08 | 5.63 | 1.00 | 0.98 |
| 5060 | -19.26 | 1.03 | 1.08 | 5.60 | 1.00 | 0.98 |
| 5061 | -19.18 | 1.03 | 1.07 | 5.56 | 1.01 | 0.98 |
| 5062 | -19.09 | 1.03 | 1.07 | 5.51 | 1.00 | 0.98 |
| 5063 | -19.01 | 1.02 | 1.06 | 5.45 | 1.00 | 0.98 |
| 5064 | -18.93 | 1.02 | 1.06 | 5.36 | 1.00 | 0.99 |
| 5065 | -18.87 | 1.02 | 1.05 | 5.26 | 1.00 | 0.99 |
| 5066 | -20.67 | 0.94 | 1.00 | 6.81 | 0.93 | 1.00 |
| 5067 | — | — | — | — | — | — |
| 5068 | — | — | — | — | — | — |
| 5069 | -20.64 | 0.94 | 1.00 | 6.74 | 0.93 | 1.00 |
| 5070 | -20.52 | 0.96 | 1.01 | 6.55 | 0.94 | 1.00 |
| 5071 | -20.23 | 0.98 | 1.03 | 6.36 | 0.96 | 0.99 |
| 5072 | -19.82 | 0.99 | 1.03 | 6.28 | 0.97 | 0.99 |
| 5073 | -19.73 | 0.99 | 1.03 | 6.27 | 0.97 | 0.99 |
| 5074 | -19.64 | 0.99 | 1.03 | 6.26 | 0.97 | 0.99 |
| 5075 | -19.55 | 0.99 | 1.03 | 6.24 | 0.97 | 0.99 |

[Table 581]

| 5076 | -19.47 | 0.99 | 1.03 | 6.22 | 0.97 | 0.99 |
|------|--------|------|------|------|------|------|
| 5077 | -19.38 | 0.99 | 1.03 | 6.19 | 0.97 | 0.99 |
| 5078 | -19.30 | 0.99 | 1.02 | 6.14 | 0.97 | 0.99 |
| 5079 | -19.22 | 0.98 | 1.02 | 6.08 | 0.97 | 0.99 |
| 5080 | -19.15 | 0.98 | 1.02 | 6.01 | 0.97 | 0.99 |
| 5081 | -19.08 | 0.98 | 1.01 | 5.92 | 0.97 | 1.00 |
| 5082 | -19.03 | 0.97 | 1.00 | 5.80 | 0.97 | 1.00 |
| 5083 | -20.94 | 0.90 | 0.95 | 7.09 | 0.90 | 1.01 |
| 5084 | – | – | – | – | – | – |
| 5085 | – | – | – | – | – | – |
| 5086 | -20.89 | 0.90 | 0.96 | 7.04 | 0.91 | 1.01 |
| 5087 | -20.74 | 0.92 | 0.97 | 6.92 | 0.92 | 1.01 |
| 5088 | -20.41 | 0.94 | 0.98 | 6.81 | 0.93 | 1.00 |
| 5089 | -20.00 | 0.95 | 0.99 | 6.77 | 0.94 | 1.00 |
| 5090 | -19.91 | 0.95 | 0.99 | 6.76 | 0.94 | 1.00 |
| 5091 | -19.82 | 0.95 | 0.99 | 6.75 | 0.94 | 1.00 |
| 5092 | -19.74 | 0.95 | 0.99 | 6.73 | 0.94 | 1.00 |
| 5093 | -19.66 | 0.95 | 0.98 | 6.70 | 0.94 | 1.00 |
| 5094 | -19.58 | 0.95 | 0.98 | 6.67 | 0.94 | 1.00 |
| 5095 | -19.50 | 0.94 | 0.98 | 6.62 | 0.94 | 1.00 |
| 5096 | -19.43 | 0.94 | 0.97 | 6.55 | 0.94 | 1.00 |
| 5097 | -19.37 | 0.94 | 0.97 | 6.47 | 0.94 | 1.00 |
| 5098 | -19.32 | 0.94 | 0.96 | 6.37 | 0.94 | 1.01 |
| 5099 | -19.27 | 0.93 | 0.96 | 6.24 | 0.94 | 1.01 |
| 5100 | -21.28 | 0.86 | 0.91 | 7.25 | 0.87 | 1.02 |
| 5101 | – | – | – | – | – | – |
| 5102 | – | – | – | – | – | – |
| 5103 | -21.22 | 0.87 | 0.91 | 7.23 | 0.88 | 1.02 |
| 5104 | -21.04 | 0.88 | 0.93 | 7.18 | 0.89 | 1.02 |
| 5105 | -20.67 | 0.90 | 0.94 | 7.15 | 0.90 | 1.01 |
| 5106 | -20.25 | 0.91 | 0.94 | 7.15 | 0.91 | 1.01 |
| 5107 | -20.17 | 0.91 | 0.94 | 7.14 | 0.91 | 1.01 |
| 5108 | -20.08 | 0.91 | 0.94 | 7.13 | 0.91 | 1.01 |
| 5109 | -20.00 | 0.91 | 0.94 | 7.11 | 0.91 | 1.01 |
| 5110 | -19.93 | 0.91 | 0.94 | 7.09 | 0.91 | 1.01 |
| 5111 | -19.85 | 0.91 | 0.94 | 7.05 | 0.91 | 1.01 |
| 5112 | -19.78 | 0.90 | 0.93 | 6.99 | 0.91 | 1.01 |
| 5113 | -19.72 | 0.90 | 0.93 | 6.92 | 0.91 | 1.01 |
| 5114 | -19.67 | 0.90 | 0.92 | 6.83 | 0.91 | 1.01 |
| 5115 | -19.63 | 0.90 | 0.92 | 6.71 | 0.91 | 1.02 |
| 5116 | -19.59 | 0.89 | 0.91 | 6.57 | 0.90 | 1.02 |
| 5117 | -21.69 | 0.83 | 0.87 | 7.29 | 0.85 | 1.03 |
| 5118 | – | – | – | – | – | – |
| 5119 | – | – | – | – | – | – |
| 5120 | -21.63 | 0.83 | 0.87 | 7.30 | 0.85 | 1.03 |
| 5121 | -21.41 | 0.84 | 0.88 | 7.32 | 0.86 | 1.03 |
| 5122 | -21.01 | 0.86 | 0.90 | 7.37 | 0.87 | 1.02 |
| 5123 | -20.59 | 0.87 | 0.90 | 7.42 | 0.88 | 1.02 |
| 5124 | -20.50 | 0.87 | 0.90 | 7.42 | 0.88 | 1.02 |
| 5125 | -20.42 | 0.87 | 0.90 | 7.41 | 0.88 | 1.02 |

[Table 582]

| 5126 | -20.34 | 0.87 | 0.90 | 7.39 | 0.88 | 1.02 |
|---|---|---|---|---|---|---|
| 5127 | -20.27 | 0.87 | 0.89 | 7.36 | 0.88 | 1.02 |
| 5128 | -20.20 | 0.87 | 0.89 | 7.32 | 0.88 | 1.02 |
| 5129 | -20.14 | 0.86 | 0.89 | 7.26 | 0.88 | 1.02 |
| 5130 | -20.09 | 0.86 | 0.88 | 7.18 | 0.88 | 1.02 |
| 5131 | -20.04 | 0.86 | 0.88 | 7.08 | 0.88 | 1.02 |
| 5132 | -20.01 | 0.86 | 0.87 | 6.96 | 0.87 | 1.03 |
| 5133 | -19.99 | 0.85 | 0.87 | 6.81 | 0.87 | 1.03 |
| 5134 | -23.44 | 1.12 | 1.22 | 3.91 | 1.04 | 0.95 |
| 5135 | – | – | – | – | – | – |
| 5136 | -23.55 | 1.12 | 1.23 | 3.67 | 1.04 | 0.95 |
| 5137 | -23.83 | 1.15 | 1.26 | 3.01 | 1.06 | 0.94 |
| 5138 | -24.07 | 1.18 | 1.29 | 2.21 | 1.08 | 0.93 |
| 5139 | -23.96 | 1.21 | 1.32 | 1.85 | 1.10 | 0.93 |
| 5140 | -23.90 | 1.21 | 1.32 | 1.83 | 1.10 | 0.93 |
| 5141 | -23.84 | 1.22 | 1.32 | 1.82 | 1.10 | 0.93 |
| 5142 | -23.76 | 1.22 | 1.32 | 1.82 | 1.11 | 0.93 |
| 5143 | -23.67 | 1.22 | 1.33 | 1.82 | 1.11 | 0.93 |
| 5144 | -23.57 | 1.22 | 1.32 | 1.83 | 1.11 | 0.93 |
| 5145 | -23.48 | 1.22 | 1.32 | 1.85 | 1.12 | 0.93 |
| 5146 | -23.38 | 1.22 | 1.32 | 1.86 | 1.12 | 0.93 |
| 5147 | -23.28 | 1.22 | 1.32 | 1.86 | 1.12 | 0.93 |
| 5148 | -23.19 | 1.22 | 1.31 | 1.86 | 1.12 | 0.94 |
| 5149 | -23.10 | 1.22 | 1.31 | 1.84 | 1.12 | 0.94 |
| 5150 | -23.34 | 1.07 | 1.17 | 4.75 | 1.01 | 0.97 |
| 5151 | – | – | – | – | – | – |
| 5152 | – | – | – | – | – | – |
| 5153 | -23.41 | 1.08 | 1.17 | 4.55 | 1.02 | 0.96 |
| 5154 | -23.60 | 1.10 | 1.20 | 4.01 | 1.03 | 0.96 |
| 5155 | -23.73 | 1.14 | 1.24 | 3.36 | 1.05 | 0.95 |
| 5156 | -23.57 | 1.16 | 1.26 | 3.08 | 1.07 | 0.94 |
| 5157 | -23.50 | 1.16 | 1.26 | 3.07 | 1.07 | 0.94 |
| 5158 | -23.43 | 1.17 | 1.26 | 3.06 | 1.07 | 0.94 |
| 5159 | -23.35 | 1.17 | 1.26 | 3.06 | 1.08 | 0.94 |
| 5160 | -23.27 | 1.17 | 1.26 | 3.07 | 1.08 | 0.94 |
| 5161 | -23.18 | 1.17 | 1.26 | 3.08 | 1.08 | 0.94 |
| 5162 | -23.09 | 1.17 | 1.26 | 3.09 | 1.08 | 0.94 |
| 5163 | -23.00 | 1.17 | 1.26 | 3.09 | 1.09 | 0.94 |
| 5164 | -22.91 | 1.17 | 1.25 | 3.09 | 1.09 | 0.95 |
| 5165 | -22.83 | 1.17 | 1.25 | 3.08 | 1.09 | 0.95 |
| 5166 | -22.76 | 1.16 | 1.24 | 3.05 | 1.09 | 0.95 |
| 5167 | -23.32 | 1.03 | 1.11 | 5.46 | 0.99 | 0.98 |
| 5168 | – | – | – | – | – | – |
| 5169 | – | – | – | – | – | – |
| 5170 | -23.37 | 1.03 | 1.12 | 5.31 | 0.99 | 0.98 |
| 5171 | -23.47 | 1.06 | 1.15 | 4.88 | 1.00 | 0.97 |
| 5172 | -23.50 | 1.09 | 1.18 | 4.38 | 1.02 | 0.96 |
| 5173 | -23.30 | 1.11 | 1.20 | 4.18 | 1.04 | 0.95 |
| 5174 | -23.23 | 1.11 | 1.20 | 4.17 | 1.04 | 0.95 |
| 5175 | -23.16 | 1.12 | 1.20 | 4.17 | 1.04 | 0.95 |

[Table 583]

| | | | | | |
|---|---|---|---|---|---|
| 5176 | -23.08 | 1.12 | 1.20 | 4.18 | 1.05 | 0.95 |
| 5177 | -23.00 | 1.12 | 1.20 | 4.19 | 1.05 | 0.95 |
| 5178 | -22.92 | 1.12 | 1.20 | 4.20 | 1.05 | 0.96 |
| 5179 | -22.83 | 1.12 | 1.20 | 4.20 | 1.05 | 0.96 |
| 5180 | -22.75 | 1.12 | 1.20 | 4.21 | 1.05 | 0.96 |
| 5181 | -22.67 | 1.12 | 1.20 | 4.20 | 1.05 | 0.96 |
| 5182 | -22.59 | 1.12 | 1.19 | 4.18 | 1.06 | 0.96 |
| 5183 | -22.53 | 1.12 | 1.19 | 4.14 | 1.05 | 0.96 |
| 5184 | -23.39 | 0.98 | 1.07 | 6.04 | 0.96 | 1.00 |
| 5185 | — | — | — | — | — | — |
| 5186 | — | — | — | — | — | — |
| 5187 | -23.42 | 0.99 | 1.07 | 5.93 | 0.96 | 0.99 |
| 5188 | -23.46 | 1.01 | 1.09 | 5.62 | 0.97 | 0.98 |
| 5189 | -23.15 | 1.06 | 1.14 | 5.15 | 1.01 | 0.97 |
| 5190 | -23.07 | 1.07 | 1.14 | 5.15 | 1.01 | 0.97 |
| 5191 | -23.00 | 1.07 | 1.14 | 5.16 | 1.01 | 0.97 |
| 5192 | -22.92 | 1.07 | 1.15 | 5.17 | 1.02 | 0.97 |
| 5193 | -22.85 | 1.07 | 1.15 | 5.18 | 1.02 | 0.97 |
| 5194 | -22.77 | 1.07 | 1.14 | 5.19 | 1.02 | 0.97 |
| 5195 | -22.69 | 1.07 | 1.14 | 5.20 | 1.02 | 0.97 |
| 5196 | -22.61 | 1.07 | 1.14 | 5.20 | 1.02 | 0.97 |
| 5197 | -22.54 | 1.07 | 1.14 | 5.18 | 1.02 | 0.97 |
| 5198 | -22.47 | 1.07 | 1.13 | 5.16 | 1.02 | 0.97 |
| 5199 | -22.42 | 1.07 | 1.13 | 5.11 | 1.02 | 0.98 |
| 5200 | -23.55 | 0.94 | 1.02 | 6.49 | 0.93 | 1.01 |
| 5201 | — | — | — | — | — | — |
| 5202 | — | — | — | — | — | — |
| 5203 | -23.55 | 0.95 | 1.03 | 6.42 | 0.94 | 1.01 |
| 5204 | -23.53 | 0.97 | 1.04 | 6.22 | 0.95 | 1.00 |
| 5205 | -23.10 | 1.02 | 1.09 | 5.99 | 0.98 | 0.98 |
| 5206 | -23.03 | 1.02 | 1.09 | 6.00 | 0.98 | 0.98 |
| 5207 | -22.95 | 1.02 | 1.09 | 6.01 | 0.98 | 0.98 |
| 5208 | -22.87 | 1.03 | 1.09 | 6.03 | 0.99 | 0.98 |
| 5209 | -22.80 | 1.03 | 1.09 | 6.05 | 0.99 | 0.98 |
| 5210 | -22.72 | 1.03 | 1.09 | 6.06 | 0.99 | 0.98 |
| 5211 | -22.64 | 1.03 | 1.09 | 6.07 | 0.99 | 0.98 |
| 5212 | -22.57 | 1.03 | 1.09 | 6.06 | 0.99 | 0.98 |
| 5213 | -22.51 | 1.03 | 1.08 | 6.05 | 0.99 | 0.99 |
| 5214 | -22.45 | 1.02 | 1.08 | 6.01 | 0.99 | 0.99 |
| 5215 | -22.41 | 1.02 | 1.08 | 5.95 | 0.99 | 0.99 |
| 5216 | -23.79 | 0.90 | 0.97 | 6.81 | 0.90 | 1.02 |
| 5217 | — | — | — | — | — | — |
| 5218 | — | — | — | — | — | — |
| 5219 | -23.77 | 0.91 | 0.98 | 6.78 | 0.91 | 1.02 |
| 5220 | -23.69 | 0.93 | 1.00 | 6.69 | 0.92 | 1.01 |
| 5221 | -23.15 | 0.97 | 1.04 | 6.69 | 0.95 | 1.00 |
| 5222 | -23.07 | 0.98 | 1.04 | 6.72 | 0.95 | 1.00 |
| 5223 | -23.00 | 0.98 | 1.04 | 6.74 | 0.96 | 1.00 |
| 5224 | -22.92 | 0.98 | 1.04 | 6.77 | 0.96 | 1.00 |
| 5225 | -22.85 | 0.98 | 1.04 | 6.79 | 0.96 | 1.00 |

[Table 584]

| 5226 | -22.77 | 0.98 | 1.04 | 6.80 | 0.96 | 1.00 |
| 5227 | -22.70 | 0.98 | 1.04 | 6.81 | 0.96 | 1.00 |
| 5228 | -22.63 | 0.98 | 1.04 | 6.81 | 0.96 | 1.00 |
| 5229 | -22.57 | 0.98 | 1.03 | 6.79 | 0.96 | 1.00 |
| 5230 | -22.52 | 0.98 | 1.03 | 6.75 | 0.96 | 1.00 |
| 5231 | -22.49 | 0.97 | 1.02 | 6.68 | 0.96 | 1.00 |
| 5232 | -24.11 | 0.86 | 0.93 | 6.99 | 0.88 | 1.04 |
| 5233 | − | − | − | − | − | − |
| 5234 | − | − | − | − | − | − |
| 5235 | -24.07 | 0.87 | 0.93 | 7.00 | 0.88 | 1.03 |
| 5236 | -23.94 | 0.89 | 0.95 | 7.02 | 0.89 | 1.03 |
| 5237 | -23.30 | 0.93 | 0.99 | 7.27 | 0.92 | 1.01 |
| 5238 | -23.22 | 0.93 | 0.99 | 7.31 | 0.92 | 1.01 |
| 5239 | -23.14 | 0.94 | 0.99 | 7.34 | 0.93 | 1.01 |
| 5240 | -23.06 | 0.94 | 0.99 | 7.37 | 0.93 | 1.01 |
| 5241 | -22.99 | 0.94 | 0.99 | 7.40 | 0.93 | 1.01 |
| 5242 | -22.91 | 0.94 | 0.99 | 7.42 | 0.93 | 1.01 |
| 5243 | -22.85 | 0.94 | 0.99 | 7.43 | 0.93 | 1.01 |
| 5244 | -22.78 | 0.94 | 0.99 | 7.43 | 0.93 | 1.01 |
| 5245 | -22.73 | 0.94 | 0.98 | 7.41 | 0.93 | 1.01 |
| 5246 | -22.69 | 0.93 | 0.98 | 7.37 | 0.93 | 1.02 |
| 5247 | -22.66 | 0.93 | 0.97 | 7.29 | 0.93 | 1.02 |
| 5248 | -24.51 | 0.83 | 0.89 | 7.03 | 0.85 | 1.05 |
| 5249 | − | − | − | − | − | − |
| 5250 | − | − | − | − | − | − |
| 5251 | -24.45 | 0.83 | 0.89 | 7.07 | 0.85 | 1.05 |
| 5252 | -24.27 | 0.85 | 0.91 | 7.21 | 0.86 | 1.04 |
| 5253 | -23.53 | 0.89 | 0.94 | 7.71 | 0.89 | 1.03 |
| 5254 | -23.45 | 0.89 | 0.94 | 7.76 | 0.90 | 1.03 |
| 5255 | -23.37 | 0.89 | 0.94 | 7.81 | 0.90 | 1.03 |
| 5256 | -23.29 | 0.89 | 0.94 | 7.85 | 0.90 | 1.03 |
| 5257 | -23.22 | 0.90 | 0.94 | 7.89 | 0.90 | 1.03 |
| 5258 | -23.14 | 0.90 | 0.94 | 7.91 | 0.90 | 1.03 |
| 5259 | -23.08 | 0.90 | 0.94 | 7.93 | 0.90 | 1.03 |
| 5260 | -23.02 | 0.90 | 0.94 | 7.93 | 0.90 | 1.03 |
| 5261 | -22.97 | 0.89 | 0.94 | 7.91 | 0.90 | 1.03 |
| 5262 | -22.93 | 0.89 | 0.93 | 7.86 | 0.90 | 1.03 |
| 5263 | -22.92 | 0.89 | 0.93 | 7.78 | 0.90 | 1.03 |
| 5264 | -24.99 | 0.79 | 0.84 | 6.92 | 0.82 | 1.06 |
| 5265 | − | − | − | − | − | − |
| 5266 | − | − | − | − | − | − |
| 5267 | -24.92 | 0.79 | 0.85 | 7.01 | 0.82 | 1.06 |
| 5268 | -24.69 | 0.81 | 0.86 | 7.25 | 0.83 | 1.05 |
| 5269 | -23.85 | 0.85 | 0.90 | 8.02 | 0.86 | 1.04 |
| 5270 | -23.76 | 0.85 | 0.90 | 8.08 | 0.87 | 1.04 |
| 5271 | -23.68 | 0.85 | 0.90 | 8.14 | 0.87 | 1.04 |
| 5272 | -23.60 | 0.85 | 0.90 | 8.20 | 0.87 | 1.04 |
| 5273 | -23.53 | 0.85 | 0.90 | 8.24 | 0.87 | 1.04 |
| 5274 | -23.46 | 0.85 | 0.90 | 8.28 | 0.87 | 1.04 |
| 5275 | -23.39 | 0.85 | 0.90 | 8.29 | 0.87 | 1.04 |

[Table 585]

| 5276 | -23.34 | 0.85 | 0.89 | 8.30 | 0.87 | 1.04 |
|---|---|---|---|---|---|---|
| 5277 | -23.29 | 0.85 | 0.89 | 8.27 | 0.87 | 1.04 |
| 5278 | -23.26 | 0.85 | 0.89 | 8.23 | 0.87 | 1.04 |
| 5279 | -23.25 | 0.85 | 0.88 | 8.14 | 0.87 | 1.04 |
| 5280 | -25.57 | 0.75 | 0.80 | 6.66 | 0.79 | 1.07 |
| 5281 | — | — | — | — | — | — |
| 5282 | — | — | — | — | — | — |
| 5283 | -25.47 | 0.76 | 0.81 | 6.79 | 0.79 | 1.07 |
| 5284 | -25.19 | 0.77 | 0.82 | 7.14 | 0.80 | 1.07 |
| 5285 | -24.25 | 0.81 | 0.85 | 8.18 | 0.83 | 1.05 |
| 5286 | -24.17 | 0.81 | 0.85 | 8.26 | 0.84 | 1.05 |
| 5287 | -24.08 | 0.81 | 0.85 | 8.34 | 0.84 | 1.05 |
| 5288 | -24.00 | 0.81 | 0.85 | 8.41 | 0.84 | 1.05 |
| 5289 | -23.92 | 0.81 | 0.85 | 8.46 | 0.84 | 1.05 |
| 5290 | -23.85 | 0.81 | 0.85 | 8.50 | 0.84 | 1.05 |
| 5291 | -23.79 | 0.81 | 0.85 | 8.53 | 0.84 | 1.05 |
| 5292 | -23.74 | 0.81 | 0.85 | 8.53 | 0.84 | 1.06 |
| 5293 | -23.70 | 0.81 | 0.85 | 8.51 | 0.84 | 1.06 |
| 5294 | -23.67 | 0.81 | 0.84 | 8.46 | 0.84 | 1.06 |
| 5295 | -23.67 | 0.81 | 0.84 | 8.37 | 0.84 | 1.06 |
| 5296 | -26.23 | 0.71 | 0.76 | 6.24 | 0.76 | 1.08 |
| 5297 | — | — | — | — | — | — |
| 5298 | -26.12 | 0.72 | 0.77 | 6.41 | 0.76 | 1.08 |
| 5299 | -25.79 | 0.73 | 0.78 | 6.88 | 0.77 | 1.08 |
| 5300 | -24.74 | 0.77 | 0.81 | 8.20 | 0.80 | 1.07 |
| 5301 | -24.65 | 0.77 | 0.81 | 8.30 | 0.81 | 1.07 |
| 5302 | -24.56 | 0.77 | 0.81 | 8.39 | 0.81 | 1.07 |
| 5303 | -24.48 | 0.77 | 0.81 | 8.47 | 0.81 | 1.07 |
| 5304 | -24.40 | 0.78 | 0.81 | 8.54 | 0.81 | 1.07 |
| 5305 | -24.33 | 0.78 | 0.81 | 8.59 | 0.81 | 1.07 |
| 5306 | -24.27 | 0.78 | 0.81 | 8.62 | 0.81 | 1.07 |
| 5307 | -24.22 | 0.77 | 0.81 | 8.63 | 0.81 | 1.07 |
| 5308 | -24.18 | 0.77 | 0.80 | 8.62 | 0.81 | 1.07 |
| 5309 | -24.16 | 0.77 | 0.80 | 8.57 | 0.81 | 1.07 |
| 5310 | -24.17 | 0.77 | 0.80 | 8.48 | 0.81 | 1.07 |
| 5311 | -27.00 | 0.68 | 0.72 | 5.67 | 0.72 | 1.09 |
| 5312 | — | — | — | — | — | — |
| 5313 | -26.87 | 0.68 | 0.73 | 5.87 | 0.73 | 1.09 |
| 5314 | -26.48 | 0.70 | 0.74 | 6.45 | 0.74 | 1.08 |
| 5315 | -25.32 | 0.73 | 0.77 | 8.06 | 0.77 | 1.08 |
| 5316 | -25.22 | 0.73 | 0.77 | 8.18 | 0.78 | 1.08 |
| 5317 | -25.13 | 0.74 | 0.77 | 8.29 | 0.78 | 1.08 |
| 5318 | -25.04 | 0.74 | 0.77 | 8.39 | 0.78 | 1.08 |
| 5319 | -24.96 | 0.74 | 0.77 | 8.47 | 0.78 | 1.08 |
| 5320 | -24.89 | 0.74 | 0.77 | 8.53 | 0.78 | 1.08 |
| 5321 | -24.83 | 0.74 | 0.77 | 8.57 | 0.78 | 1.08 |
| 5322 | -24.78 | 0.74 | 0.77 | 8.59 | 0.78 | 1.08 |
| 5323 | -24.75 | 0.74 | 0.76 | 8.58 | 0.78 | 1.08 |
| 5324 | -24.73 | 0.73 | 0.76 | 8.53 | 0.78 | 1.08 |
| 5325 | -24.75 | 0.73 | 0.75 | 8.44 | 0.78 | 1.08 |

[Table 586]

| | | | | | | |
|------|--------|------|------|------|------|------|
| 5326 | -27.45 | 0.65 | 0.67 | 5.10 | 0.67 | 1.05 |
| 5327 | — | — | — | — | — | — |
| 5328 | — | — | — | — | — | — |
| 5329 | -27.57 | 0.65 | 0.69 | 5.40 | 0.70 | 1.09 |
| 5330 | -27.28 | 0.66 | 0.70 | 5.86 | 0.71 | 1.09 |
| 5331 | -25.99 | 0.70 | 0.73 | 7.77 | 0.74 | 1.09 |
| 5332 | -25.88 | 0.70 | 0.73 | 7.91 | 0.74 | 1.09 |
| 5333 | -25.79 | 0.70 | 0.73 | 8.04 | 0.75 | 1.09 |
| 5334 | -25.69 | 0.70 | 0.73 | 8.15 | 0.75 | 1.09 |
| 5335 | -25.61 | 0.70 | 0.73 | 8.25 | 0.75 | 1.09 |
| 5336 | -25.54 | 0.70 | 0.73 | 8.32 | 0.75 | 1.09 |
| 5337 | -25.48 | 0.70 | 0.73 | 8.38 | 0.75 | 1.09 |
| 5338 | -25.43 | 0.70 | 0.73 | 8.40 | 0.75 | 1.09 |
| 5339 | -25.40 | 0.70 | 0.72 | 8.39 | 0.75 | 1.09 |
| 5340 | -25.39 | 0.70 | 0.72 | 8.35 | 0.75 | 1.10 |
| 5341 | -25.41 | 0.69 | 0.71 | 8.25 | 0.75 | 1.09 |
| 5342 | -28.71 | 0.61 | 0.64 | 4.29 | 0.66 | 1.09 |
| 5343 | — | — | — | — | — | — |
| 5344 | — | — | — | — | — | — |
| 5345 | -28.54 | 0.62 | 0.65 | 4.56 | 0.66 | 1.09 |
| 5346 | -28.20 | 0.63 | 0.66 | 5.09 | 0.67 | 1.10 |
| 5347 | -26.76 | 0.66 | 0.69 | 7.31 | 0.71 | 1.10 |
| 5348 | -26.65 | 0.66 | 0.69 | 7.47 | 0.71 | 1.10 |
| 5349 | -26.54 | 0.66 | 0.69 | 7.62 | 0.71 | 1.10 |
| 5350 | -26.44 | 0.66 | 0.69 | 7.75 | 0.72 | 1.10 |
| 5351 | -26.35 | 0.66 | 0.69 | 7.87 | 0.72 | 1.10 |
| 5352 | -26.27 | 0.66 | 0.69 | 7.95 | 0.72 | 1.10 |
| 5353 | -26.21 | 0.66 | 0.69 | 8.02 | 0.72 | 1.10 |
| 5354 | -26.16 | 0.66 | 0.69 | 8.05 | 0.72 | 1.11 |
| 5355 | -26.13 | 0.66 | 0.68 | 8.05 | 0.72 | 1.11 |
| 5356 | -26.13 | 0.66 | 0.68 | 8.01 | 0.72 | 1.11 |
| 5357 | -26.15 | 0.66 | 0.68 | 7.92 | 0.71 | 1.11 |
| 5358 | -22.36 | 1.14 | 1.25 | 4.87 | 1.07 | 0.96 |
| 5359 | — | — | — | — | — | — |
| 5360 | — | — | — | — | — | — |
| 5361 | -22.47 | 1.15 | 1.27 | 4.61 | 1.08 | 0.96 |
| 5362 | -22.87 | 1.19 | 1.30 | 3.68 | 1.10 | 0.95 |
| 5363 | -23.02 | 1.25 | 1.37 | 2.46 | 1.14 | 0.93 |
| 5364 | -22.97 | 1.26 | 1.38 | 2.43 | 1.15 | 0.93 |
| 5365 | -22.89 | 1.26 | 1.38 | 2.42 | 1.15 | 0.93 |
| 5366 | -22.81 | 1.26 | 1.38 | 2.42 | 1.15 | 0.93 |
| 5367 | -22.72 | 1.27 | 1.38 | 2.43 | 1.16 | 0.93 |
| 5368 | -22.62 | 1.27 | 1.38 | 2.44 | 1.16 | 0.93 |
| 5369 | -22.52 | 1.27 | 1.38 | 2.45 | 1.16 | 0.93 |
| 5370 | -22.42 | 1.27 | 1.38 | 2.47 | 1.16 | 0.94 |
| 5371 | -22.31 | 1.27 | 1.37 | 2.48 | 1.16 | 0.94 |
| 5372 | -22.21 | 1.26 | 1.37 | 2.48 | 1.17 | 0.94 |
| 5373 | -22.12 | 1.26 | 1.36 | 2.46 | 1.17 | 0.94 |
| 5374 | -22.24 | 1.10 | 1.20 | 5.73 | 1.05 | 0.98 |
| 5375 | — | — | — | — | — | — |

[Table 587]

| 5376 | – | – | – | – | – | – |
|---|---|---|---|---|---|---|
| 5377 | -22.32 | 1.11 | 1.21 | 5.52 | 1.05 | 0.97 |
| 5378 | -22.59 | 1.14 | 1.25 | 4.75 | 1.07 | 0.96 |
| 5379 | -22.58 | 1.20 | 1.31 | 3.76 | 1.11 | 0.95 |
| 5380 | -22.51 | 1.21 | 1.31 | 3.74 | 1.12 | 0.95 |
| 5381 | -22.44 | 1.21 | 1.31 | 3.74 | 1.12 | 0.95 |
| 5382 | -22.35 | 1.21 | 1.32 | 3.74 | 1.12 | 0.95 |
| 5383 | -22.27 | 1.21 | 1.32 | 3.75 | 1.13 | 0.95 |
| 5384 | -22.17 | 1.22 | 1.32 | 3.76 | 1.13 | 0.95 |
| 5385 | -22.08 | 1.22 | 1.32 | 3.77 | 1.13 | 0.95 |
| 5386 | -21.98 | 1.22 | 1.31 | 3.78 | 1.13 | 0.95 |
| 5387 | -21.89 | 1.22 | 1.31 | 3.79 | 1.13 | 0.95 |
| 5388 | -21.80 | 1.21 | 1.31 | 3.78 | 1.13 | 0.95 |
| 5389 | -21.71 | 1.21 | 1.30 | 3.75 | 1.13 | 0.95 |
| 5390 | -22.20 | 1.05 | 1.15 | 6.47 | 1.02 | 0.99 |
| 5391 | – | – | – | – | – | – |
| 5392 | – | – | – | – | – | – |
| 5393 | -22.26 | 1.06 | 1.16 | 6.30 | 1.03 | 0.99 |
| 5394 | -22.43 | 1.09 | 1.19 | 5.69 | 1.05 | 0.98 |
| 5395 | -22.25 | 1.15 | 1.25 | 4.93 | 1.08 | 0.96 |
| 5396 | -22.19 | 1.16 | 1.25 | 4.92 | 1.09 | 0.96 |
| 5397 | -22.11 | 1.16 | 1.25 | 4.92 | 1.09 | 0.96 |
| 5398 | -22.03 | 1.16 | 1.26 | 4.93 | 1.09 | 0.96 |
| 5399 | -21.94 | 1.16 | 1.26 | 4.94 | 1.10 | 0.96 |
| 5400 | -21.85 | 1.17 | 1.26 | 4.95 | 1.10 | 0.96 |
| 5401 | -21.76 | 1.17 | 1.26 | 4.97 | 1.10 | 0.96 |
| 5402 | -21.67 | 1.17 | 1.25 | 4.97 | 1.10 | 0.96 |
| 5403 | -21.59 | 1.17 | 1.25 | 4.97 | 1.10 | 0.96 |
| 5404 | -21.51 | 1.16 | 1.25 | 4.95 | 1.10 | 0.97 |
| 5405 | -21.44 | 1.16 | 1.24 | 4.92 | 1.10 | 0.97 |
| 5406 | -22.26 | 1.01 | 1.10 | 7.08 | 1.00 | 1.01 |
| 5407 | – | – | – | – | – | – |
| 5408 | – | – | – | – | – | – |
| 5409 | -22.28 | 1.02 | 1.11 | 6.95 | 1.00 | 1.00 |
| 5410 | -22.36 | 1.05 | 1.14 | 6.49 | 1.02 | 0.99 |
| 5411 | -22.05 | 1.11 | 1.19 | 5.97 | 1.06 | 0.98 |
| 5412 | -21.98 | 1.11 | 1.20 | 5.97 | 1.06 | 0.97 |
| 5413 | -21.90 | 1.11 | 1.20 | 5.98 | 1.06 | 0.97 |
| 5414 | -21.82 | 1.11 | 1.20 | 5.99 | 1.06 | 0.97 |
| 5415 | -21.74 | 1.12 | 1.20 | 6.01 | 1.07 | 0.97 |
| 5416 | -21.65 | 1.12 | 1.20 | 6.02 | 1.07 | 0.98 |
| 5417 | -21.57 | 1.12 | 1.20 | 6.04 | 1.07 | 0.98 |
| 5418 | -21.49 | 1.12 | 1.20 | 6.04 | 1.07 | 0.98 |
| 5419 | -21.41 | 1.12 | 1.19 | 6.03 | 1.07 | 0.98 |
| 5420 | -21.33 | 1.11 | 1.19 | 6.01 | 1.07 | 0.98 |
| 5421 | -21.27 | 1.11 | 1.18 | 5.96 | 1.07 | 0.98 |
| 5422 | -22.38 | 0.97 | 1.06 | 7.57 | 0.97 | 1.02 |
| 5423 | – | – | – | – | – | – |
| 5424 | – | – | – | – | – | – |
| 5425 | -22.39 | 0.98 | 1.07 | 7.48 | 0.98 | 1.02 |

[Table 588]

| 5426 | -22.38 | 1.01 | 1.09 | 7.17 | 0.99 | 1.01 |
|------|--------|------|------|------|------|------|
| 5427 | -21.96 | 1.06 | 1.14 | 6.89 | 1.03 | 0.99 |
| 5428 | -21.88 | 1.06 | 1.14 | 6.90 | 1.03 | 0.99 |
| 5429 | -21.80 | 1.07 | 1.14 | 6.92 | 1.03 | 0.99 |
| 5430 | -21.72 | 1.07 | 1.14 | 6.94 | 1.04 | 0.99 |
| 5431 | -21.64 | 1.07 | 1.15 | 6.96 | 1.04 | 0.99 |
| 5432 | -21.56 | 1.07 | 1.15 | 6.97 | 1.04 | 0.99 |
| 5433 | -21.47 | 1.07 | 1.14 | 6.99 | 1.04 | 0.99 |
| 5434 | -21.40 | 1.07 | 1.14 | 6.99 | 1.04 | 0.99 |
| 5435 | -21.32 | 1.07 | 1.14 | 6.98 | 1.04 | 0.99 |
| 5436 | -21.26 | 1.07 | 1.14 | 6.95 | 1.04 | 0.99 |
| 5437 | -21.21 | 1.06 | 1.13 | 6.89 | 1.04 | 1.00 |
| 5438 | -22.59 | 0.93 | 1.01 | 7.92 | 0.95 | 1.04 |
| 5439 | — | — | — | — | — | — |
| 5440 | -22.58 | 0.94 | 1.02 | 7.88 | 0.95 | 1.04 |
| 5441 | -22.49 | 0.96 | 1.05 | 7.72 | 0.97 | 1.03 |
| 5442 | -21.95 | 1.01 | 1.09 | 7.68 | 1.00 | 1.01 |
| 5443 | -21.88 | 1.02 | 1.09 | 7.70 | 1.00 | 1.01 |
| 5444 | -21.80 | 1.02 | 1.09 | 7.73 | 1.01 | 1.01 |
| 5445 | -21.72 | 1.02 | 1.09 | 7.76 | 1.01 | 1.01 |
| 5446 | -21.63 | 1.02 | 1.09 | 7.78 | 1.01 | 1.01 |
| 5447 | -21.55 | 1.02 | 1.09 | 7.80 | 1.01 | 1.01 |
| 5448 | -21.48 | 1.03 | 1.09 | 7.82 | 1.01 | 1.01 |
| 5449 | -21.41 | 1.02 | 1.09 | 7.82 | 1.01 | 1.01 |
| 5450 | -21.34 | 1.02 | 1.09 | 7.81 | 1.01 | 1.01 |
| 5451 | -21.29 | 1.02 | 1.08 | 7.77 | 1.01 | 1.01 |
| 5452 | -21.24 | 1.02 | 1.08 | 7.71 | 1.01 | 1.01 |
| 5453 | -22.87 | 0.89 | 0.97 | 8.15 | 0.92 | 1.06 |
| 5454 | — | — | — | — | — | — |
| 5455 | -22.83 | 0.90 | 0.98 | 8.15 | 0.93 | 1.05 |
| 5456 | -22.68 | 0.92 | 1.00 | 8.13 | 0.94 | 1.04 |
| 5457 | -22.05 | 0.97 | 1.04 | 8.34 | 0.97 | 1.02 |
| 5458 | -21.97 | 0.97 | 1.04 | 8.38 | 0.98 | 1.02 |
| 5459 | -21.88 | 0.98 | 1.04 | 8.42 | 0.98 | 1.02 |
| 5460 | -21.80 | 0.98 | 1.04 | 8.45 | 0.98 | 1.02 |
| 5461 | -21.72 | 0.98 | 1.04 | 8.48 | 0.98 | 1.02 |
| 5462 | -21.64 | 0.98 | 1.04 | 8.51 | 0.98 | 1.02 |
| 5463 | -21.57 | 0.98 | 1.04 | 8.53 | 0.99 | 1.02 |
| 5464 | -21.50 | 0.98 | 1.04 | 8.53 | 0.99 | 1.02 |
| 5465 | -21.44 | 0.98 | 1.04 | 8.52 | 0.99 | 1.02 |
| 5466 | -21.39 | 0.98 | 1.03 | 8.48 | 0.99 | 1.03 |
| 5467 | -21.36 | 0.97 | 1.03 | 8.41 | 0.98 | 1.03 |
| 5468 | -23.17 | 0.86 | 0.93 | 8.28 | 0.90 | 1.07 |
| 5469 | — | — | — | — | — | — |
| 5470 | -23.12 | 0.87 | 0.94 | 8.31 | 0.90 | 1.07 |
| 5471 | -22.95 | 0.88 | 0.96 | 8.41 | 0.92 | 1.06 |
| 5472 | -22.22 | 0.93 | 0.99 | 8.87 | 0.95 | 1.04 |
| 5473 | -22.13 | 0.93 | 1.00 | 8.93 | 0.95 | 1.04 |
| 5474 | -22.05 | 0.93 | 1.00 | 8.98 | 0.95 | 1.04 |
| 5475 | -21.97 | 0.94 | 1.00 | 9.02 | 0.95 | 1.04 |

[Table 589]

| 5476 | -21.89 | 0.94 | 1.00 | 9.06 | 0.95 | 1.04 |
|------|--------|------|------|------|------|------|
| 5477 | -21.81 | 0.94 | 1.00 | 9.10 | 0.96 | 1.04 |
| 5478 | -21.74 | 0.94 | 1.00 | 9.12 | 0.96 | 1.04 |
| 5479 | -21.68 | 0.94 | 0.99 | 9.12 | 0.96 | 1.04 |
| 5480 | -21.62 | 0.94 | 0.99 | 9.11 | 0.96 | 1.04 |
| 5481 | -21.58 | 0.93 | 0.99 | 9.06 | 0.96 | 1.04 |
| 5482 | -21.56 | 0.93 | 0.98 | 8.99 | 0.95 | 1.04 |
| 5483 | -23.58 | 0.82 | 0.89 | 8.26 | 0.87 | 1.08 |
| 5484 | – | – | – | – | – | – |
| 5485 | – | – | – | – | – | – |
| 5486 | -23.51 | 0.83 | 0.90 | 8.34 | 0.88 | 1.08 |
| 5487 | -23.30 | 0.85 | 0.91 | 8.55 | 0.89 | 1.07 |
| 5488 | -22.47 | 0.89 | 0.95 | 9.27 | 0.92 | 1.06 |
| 5489 | -22.39 | 0.89 | 0.95 | 9.34 | 0.92 | 1.05 |
| 5490 | -22.30 | 0.89 | 0.95 | 9.41 | 0.92 | 1.05 |
| 5491 | -22.22 | 0.89 | 0.95 | 9.47 | 0.92 | 1.05 |
| 5492 | -22.14 | 0.90 | 0.95 | 9.52 | 0.93 | 1.05 |
| 5493 | -22.06 | 0.90 | 0.95 | 9.56 | 0.93 | 1.05 |
| 5494 | -21.99 | 0.90 | 0.95 | 9.58 | 0.93 | 1.06 |
| 5495 | -21.93 | 0.90 | 0.95 | 9.59 | 0.93 | 1.06 |
| 5496 | -21.88 | 0.90 | 0.95 | 9.58 | 0.93 | 1.06 |
| 5497 | -21.85 | 0.89 | 0.94 | 9.53 | 0.93 | 1.06 |
| 5498 | -21.84 | 0.89 | 0.94 | 9.45 | 0.93 | 1.06 |
| 5499 | -24.07 | 0.79 | 0.85 | 8.10 | 0.85 | 1.10 |
| 5500 | – | – | – | – | – | – |
| 5501 | – | – | – | – | – | – |
| 5502 | -23.98 | 0.79 | 0.86 | 8.22 | 0.85 | 1.09 |
| 5503 | -23.72 | 0.81 | 0.87 | 8.54 | 0.86 | 1.09 |
| 5504 | -22.81 | 0.85 | 0.91 | 9.54 | 0.89 | 1.07 |
| 5505 | -22.72 | 0.85 | 0.91 | 9.63 | 0.89 | 1.07 |
| 5506 | -22.63 | 0.85 | 0.91 | 9.71 | 0.90 | 1.07 |
| 5507 | -22.54 | 0.85 | 0.91 | 9.78 | 0.90 | 1.07 |
| 5508 | -22.46 | 0.86 | 0.91 | 9.84 | 0.90 | 1.07 |
| 5509 | -22.39 | 0.86 | 0.91 | 9.89 | 0.90 | 1.07 |
| 5510 | -22.32 | 0.86 | 0.91 | 9.92 | 0.90 | 1.07 |
| 5511 | -22.26 | 0.86 | 0.90 | 9.93 | 0.90 | 1.07 |
| 5512 | -22.22 | 0.85 | 0.90 | 9.92 | 0.90 | 1.07 |
| 5513 | -22.19 | 0.85 | 0.90 | 9.88 | 0.90 | 1.07 |
| 5514 | -22.19 | 0.85 | 0.89 | 9.79 | 0.90 | 1.07 |
| 5515 | -24.65 | 0.75 | 0.81 | 7.79 | 0.82 | 1.11 |
| 5516 | – | – | – | – | – | – |
| 5517 | – | – | – | – | – | – |
| 5518 | -24.54 | 0.76 | 0.82 | 7.95 | 0.82 | 1.11 |
| 5519 | -24.23 | 0.77 | 0.83 | 8.39 | 0.83 | 1.10 |
| 5520 | -23.22 | 0.81 | 0.86 | 9.67 | 0.86 | 1.09 |
| 5521 | -23.12 | 0.81 | 0.86 | 9.78 | 0.87 | 1.09 |
| 5522 | -23.03 | 0.81 | 0.87 | 9.87 | 0.87 | 1.09 |
| 5523 | -22.94 | 0.82 | 0.87 | 9.95 | 0.87 | 1.09 |
| 5524 | -22.86 | 0.82 | 0.87 | 10.03 | 0.87 | 1.09 |
| 5525 | -22.79 | 0.82 | 0.87 | 10.09 | 0.87 | 1.09 |

[Table 590]

| 5526 | -22.72 | 0.82 | 0.86 | 10.13 | 0.87 | 1.09 |
|---|---|---|---|---|---|---|
| 5527 | -22.67 | 0.82 | 0.86 | 10.15 | 0.87 | 1.09 |
| 5528 | -22.63 | 0.82 | 0.86 | 10.14 | 0.87 | 1.09 |
| 5529 | -22.61 | 0.81 | 0.86 | 10.09 | 0.87 | 1.09 |
| 5530 | -22.61 | 0.81 | 0.85 | 10.00 | 0.87 | 1.09 |
| 5531 | -25.31 | 0.72 | 0.77 | 7.32 | 0.79 | 1.12 |
| 5532 | – | – | – | – | – | – |
| 5533 | – | – | – | – | – | – |
| 5534 | -25.19 | 0.72 | 0.78 | 7.51 | 0.79 | 1.12 |
| 5535 | -24.83 | 0.74 | 0.79 | 8.07 | 0.80 | 1.11 |
| 5536 | -23.71 | 0.77 | 0.82 | 9.65 | 0.83 | 1.10 |
| 5537 | -23.61 | 0.78 | 0.82 | 9.78 | 0.84 | 1.10 |
| 5538 | -23.51 | 0.78 | 0.83 | 9.89 | 0.84 | 1.10 |
| 5539 | -23.42 | 0.78 | 0.83 | 9.99 | 0.84 | 1.10 |
| 5540 | -23.34 | 0.78 | 0.83 | 10.08 | 0.84 | 1.10 |
| 5541 | -23.26 | 0.78 | 0.82 | 10.15 | 0.84 | 1.10 |
| 5542 | -23.20 | 0.78 | 0.82 | 10.20 | 0.84 | 1.10 |
| 5543 | -23.15 | 0.78 | 0.82 | 10.23 | 0.84 | 1.10 |
| 5544 | -23.11 | 0.78 | 0.82 | 10.22 | 0.84 | 1.10 |
| 5545 | -23.10 | 0.78 | 0.81 | 10.17 | 0.84 | 1.10 |
| 5546 | -23.11 | 0.77 | 0.81 | 10.08 | 0.84 | 1.10 |
| 5547 | -26.08 | 0.68 | 0.74 | 6.67 | 0.75 | 1.13 |
| 5548 | – | – | – | – | – | – |
| 5549 | – | – | – | – | – | – |
| 5550 | -25.93 | 0.69 | 0.74 | 6.91 | 0.76 | 1.13 |
| 5551 | -25.52 | 0.70 | 0.75 | 7.59 | 0.77 | 1.13 |
| 5552 | -24.28 | 0.74 | 0.78 | 9.49 | 0.81 | 1.12 |
| 5553 | -24.17 | 0.74 | 0.78 | 9.63 | 0.81 | 1.12 |
| 5554 | -24.07 | 0.74 | 0.79 | 9.77 | 0.81 | 1.12 |
| 5555 | -23.98 | 0.74 | 0.79 | 9.89 | 0.81 | 1.12 |
| 5556 | -23.89 | 0.74 | 0.79 | 9.99 | 0.81 | 1.12 |
| 5557 | -23.82 | 0.74 | 0.79 | 10.07 | 0.81 | 1.12 |
| 5558 | -23.75 | 0.74 | 0.78 | 10.13 | 0.81 | 1.12 |
| 5559 | -23.70 | 0.74 | 0.78 | 10.17 | 0.81 | 1.12 |
| 5560 | -23.67 | 0.74 | 0.78 | 10.16 | 0.81 | 1.12 |
| 5561 | -23.66 | 0.74 | 0.77 | 10.12 | 0.81 | 1.12 |
| 5562 | -23.68 | 0.74 | 0.77 | 10.03 | 0.81 | 1.12 |
| 5563 | -26.95 | 0.65 | 0.70 | 5.85 | 0.72 | 1.14 |
| 5564 | – | – | – | – | – | – |
| 5565 | – | – | – | – | – | – |
| 5566 | -26.79 | 0.65 | 0.70 | 6.13 | 0.73 | 1.14 |
| 5567 | -26.31 | 0.67 | 0.71 | 6.93 | 0.74 | 1.14 |
| 5568 | -24.94 | 0.70 | 0.74 | 9.16 | 0.78 | 1.13 |
| 5569 | -24.82 | 0.70 | 0.75 | 9.33 | 0.78 | 1.13 |
| 5570 | -24.72 | 0.70 | 0.75 | 9.48 | 0.78 | 1.13 |
| 5571 | -24.62 | 0.71 | 0.75 | 9.62 | 0.78 | 1.13 |
| 5572 | -24.53 | 0.71 | 0.75 | 9.75 | 0.78 | 1.13 |
| 5573 | -24.45 | 0.71 | 0.75 | 9.84 | 0.78 | 1.13 |
| 5574 | -24.38 | 0.71 | 0.75 | 9.91 | 0.78 | 1.13 |
| 5575 | -24.34 | 0.71 | 0.74 | 9.96 | 0.78 | 1.13 |

[Table 591]

| 5576 | -24.31 | 0.70 | 0.74 | 9.96 | 0.78 | 1.14 |
| 5577 | -24.30 | 0.70 | 0.74 | 9.92 | 0.78 | 1.13 |
| 5578 | -24.33 | 0.70 | 0.73 | 9.83 | 0.78 | 1.13 |
| 5579 | -21.25 | 1.17 | 1.29 | 5.87 | 1.11 | 0.97 |
| 5580 | — | — | — | — | — | — |
| 5581 | -21.38 | 1.18 | 1.30 | 5.60 | 1.11 | 0.96 |
| 5582 | -21.92 | 1.23 | 1.35 | 4.35 | 1.14 | 0.95 |
| 5583 | -22.11 | 1.30 | 1.43 | 3.05 | 1.18 | 0.93 |
| 5584 | -22.04 | 1.30 | 1.43 | 3.02 | 1.19 | 0.93 |
| 5585 | -21.97 | 1.30 | 1.43 | 3.00 | 1.19 | 0.93 |
| 5586 | -21.89 | 1.31 | 1.43 | 3.00 | 1.20 | 0.93 |
| 5587 | -21.80 | 1.31 | 1.44 | 3.00 | 1.20 | 0.93 |
| 5588 | -21.70 | 1.31 | 1.44 | 3.01 | 1.20 | 0.93 |
| 5589 | -21.59 | 1.31 | 1.44 | 3.03 | 1.20 | 0.94 |
| 5590 | -21.48 | 1.31 | 1.43 | 3.04 | 1.21 | 0.94 |
| 5591 | -21.38 | 1.31 | 1.43 | 3.05 | 1.21 | 0.94 |
| 5592 | -21.27 | 1.31 | 1.43 | 3.05 | 1.21 | 0.94 |
| 5593 | -21.17 | 1.31 | 1.42 | 3.04 | 1.21 | 0.94 |
| 5594 | -21.12 | 1.13 | 1.24 | 6.76 | 1.09 | 0.98 |
| 5595 | — | — | — | — | — | — |
| 5596 | -21.21 | 1.14 | 1.25 | 6.53 | 1.09 | 0.98 |
| 5597 | -21.59 | 1.18 | 1.30 | 5.50 | 1.11 | 0.97 |
| 5598 | -21.60 | 1.25 | 1.36 | 4.43 | 1.16 | 0.95 |
| 5599 | -21.53 | 1.25 | 1.37 | 4.41 | 1.16 | 0.95 |
| 5600 | -21.46 | 1.25 | 1.37 | 4.40 | 1.16 | 0.95 |
| 5601 | -21.38 | 1.26 | 1.37 | 4.40 | 1.17 | 0.95 |
| 5602 | -21.29 | 1.26 | 1.37 | 4.41 | 1.17 | 0.95 |
| 5603 | -21.19 | 1.26 | 1.37 | 4.42 | 1.17 | 0.95 |
| 5604 | -21.09 | 1.26 | 1.37 | 4.43 | 1.18 | 0.95 |
| 5605 | -20.99 | 1.26 | 1.37 | 4.44 | 1.18 | 0.95 |
| 5606 | -20.89 | 1.26 | 1.37 | 4.44 | 1.18 | 0.95 |
| 5607 | -20.80 | 1.26 | 1.36 | 4.44 | 1.18 | 0.95 |
| 5608 | -20.71 | 1.26 | 1.36 | 4.41 | 1.18 | 0.96 |
| 5609 | -21.13 | 1.09 | 1.20 | 7.35 | 1.07 | 1.00 |
| 5610 | — | — | — | — | — | — |
| 5611 | -21.19 | 1.10 | 1.21 | 7.17 | 1.07 | 1.00 |
| 5612 | -21.38 | 1.13 | 1.24 | 6.51 | 1.09 | 0.98 |
| 5613 | -21.23 | 1.20 | 1.30 | 5.68 | 1.13 | 0.96 |
| 5614 | -21.16 | 1.20 | 1.31 | 5.67 | 1.13 | 0.96 |
| 5615 | -21.08 | 1.20 | 1.31 | 5.67 | 1.14 | 0.96 |
| 5616 | -21.00 | 1.21 | 1.31 | 5.67 | 1.14 | 0.96 |
| 5617 | -20.91 | 1.21 | 1.31 | 5.68 | 1.14 | 0.96 |
| 5618 | -20.82 | 1.21 | 1.31 | 5.69 | 1.14 | 0.96 |
| 5619 | -20.73 | 1.21 | 1.31 | 5.70 | 1.15 | 0.96 |
| 5620 | -20.63 | 1.21 | 1.31 | 5.71 | 1.15 | 0.97 |
| 5621 | -20.54 | 1.21 | 1.31 | 5.71 | 1.15 | 0.97 |
| 5622 | -20.46 | 1.21 | 1.30 | 5.70 | 1.15 | 0.97 |
| 5623 | -20.38 | 1.21 | 1.30 | 5.66 | 1.15 | 0.97 |
| 5624 | -21.13 | 1.05 | 1.15 | 8.04 | 1.04 | 1.02 |
| 5625 | — | — | — | — | — | — |

[Table 592]

625

| | | | | | | |
|---|---|---|---|---|---|---|
| 5626 | – | – | – | – | – | – |
| 5627 | -21.17 | 1.06 | 1.16 | 7.90 | 1.05 | 1.01 |
| 5628 | -21.26 | 1.09 | 1.19 | 7.40 | 1.07 | 1.00 |
| 5629 | -20.97 | 1.15 | 1.25 | 6.80 | 1.10 | 0.98 |
| 5630 | -20.90 | 1.15 | 1.25 | 6.80 | 1.11 | 0.98 |
| 5631 | -20.82 | 1.15 | 1.25 | 6.81 | 1.11 | 0.98 |
| 5632 | -20.74 | 1.16 | 1.25 | 6.82 | 1.11 | 0.98 |
| 5633 | -20.65 | 1.16 | 1.25 | 6.83 | 1.11 | 0.98 |
| 5634 | -20.56 | 1.16 | 1.25 | 6.85 | 1.12 | 0.98 |
| 5635 | -20.48 | 1.16 | 1.25 | 6.86 | 1.12 | 0.98 |
| 5636 | -20.39 | 1.16 | 1.25 | 6.86 | 1.12 | 0.98 |
| 5637 | -20.31 | 1.16 | 1.25 | 6.86 | 1.12 | 0.98 |
| 5638 | -20.23 | 1.16 | 1.24 | 6.84 | 1.12 | 0.98 |
| 5639 | -20.17 | 1.16 | 1.24 | 6.79 | 1.12 | 0.99 |
| 5640 | -21.21 | 1.01 | 1.11 | 8.61 | 1.02 | 1.03 |
| 5641 | – | – | – | – | – | – |
| 5642 | – | – | – | – | – | – |
| 5643 | -21.22 | 1.02 | 1.12 | 8.52 | 1.03 | 1.03 |
| 5644 | -21.23 | 1.05 | 1.14 | 8.16 | 1.04 | 1.02 |
| 5645 | -20.82 | 1.10 | 1.19 | 7.80 | 1.08 | 1.00 |
| 5646 | -20.75 | 1.11 | 1.20 | 7.81 | 1.08 | 1.00 |
| 5647 | -20.67 | 1.11 | 1.20 | 7.83 | 1.08 | 1.00 |
| 5648 | -20.59 | 1.11 | 1.20 | 7.85 | 1.08 | 1.00 |
| 5649 | -20.50 | 1.11 | 1.20 | 7.86 | 1.09 | 1.00 |
| 5650 | -20.42 | 1.11 | 1.20 | 7.88 | 1.09 | 1.00 |
| 5651 | -20.33 | 1.11 | 1.20 | 7.89 | 1.09 | 1.00 |
| 5652 | -20.25 | 1.11 | 1.20 | 7.90 | 1.09 | 1.00 |
| 5653 | -20.18 | 1.11 | 1.19 | 7.89 | 1.09 | 1.00 |
| 5654 | -20.11 | 1.11 | 1.19 | 7.86 | 1.09 | 1.00 |
| 5655 | -20.05 | 1.11 | 1.18 | 7.81 | 1.09 | 1.00 |
| 5656 | -21.36 | 0.97 | 1.06 | 9.06 | 1.00 | 1.05 |
| 5657 | – | – | – | – | – | – |
| 5658 | – | – | – | – | – | – |
| 5659 | -21.35 | 0.98 | 1.07 | 9.00 | 1.00 | 1.05 |
| 5660 | -21.28 | 1.00 | 1.10 | 8.80 | 1.02 | 1.04 |
| 5661 | -20.77 | 1.06 | 1.14 | 8.68 | 1.05 | 1.01 |
| 5662 | -20.69 | 1.06 | 1.14 | 8.70 | 1.05 | 1.01 |
| 5663 | -20.61 | 1.06 | 1.15 | 8.73 | 1.06 | 1.01 |
| 5664 | -20.53 | 1.07 | 1.15 | 8.75 | 1.06 | 1.01 |
| 5665 | -20.44 | 1.07 | 1.15 | 8.78 | 1.06 | 1.01 |
| 5666 | -20.36 | 1.07 | 1.15 | 8.80 | 1.06 | 1.01 |
| 5667 | -20.28 | 1.07 | 1.15 | 8.81 | 1.06 | 1.01 |
| 5668 | -20.21 | 1.07 | 1.14 | 8.82 | 1.06 | 1.01 |
| 5669 | -20.14 | 1.07 | 1.14 | 8.81 | 1.07 | 1.01 |
| 5670 | -20.08 | 1.07 | 1.14 | 8.77 | 1.07 | 1.02 |
| 5671 | -20.03 | 1.06 | 1.13 | 8.71 | 1.06 | 1.02 |
| 5672 | -21.58 | 0.93 | 1.02 | 9.38 | 0.97 | 1.07 |
| 5673 | – | – | – | – | – | – |
| 5674 | – | – | – | – | – | – |
| 5675 | -21.55 | 0.94 | 1.03 | 9.36 | 0.98 | 1.07 |

[Table 593]

626

| 5676 | -21.41 | 0.96 | 1.05 | 9.30 | 0.99 | 1.05 |
|------|--------|------|------|------|------|------|
| 5677 | -20.80 | 1.01 | 1.09 | 9.44 | 1.03 | 1.03 |
| 5678 | -20.72 | 1.02 | 1.10 | 9.47 | 1.03 | 1.03 |
| 5679 | -20.64 | 1.02 | 1.10 | 9.51 | 1.03 | 1.03 |
| 5680 | -20.55 | 1.02 | 1.10 | 9.54 | 1.03 | 1.03 |
| 5681 | -20.47 | 1.02 | 1.10 | 9.58 | 1.03 | 1.03 |
| 5682 | -20.39 | 1.02 | 1.10 | 9.60 | 1.04 | 1.03 |
| 5683 | -20.32 | 1.02 | 1.10 | 9.62 | 1.04 | 1.03 |
| 5684 | -20.25 | 1.02 | 1.10 | 9.62 | 1.04 | 1.03 |
| 5685 | -20.18 | 1.02 | 1.09 | 9.61 | 1.04 | 1.03 |
| 5686 | -20.13 | 1.02 | 1.09 | 9.57 | 1.04 | 1.03 |
| 5687 | -20.09 | 1.02 | 1.08 | 9.50 | 1.04 | 1.03 |
| 5688 | -21.86 | 0.89 | 0.98 | 9.57 | 0.95 | 1.09 |
| 5689 | — | — | — | — | — | — |
| 5690 | — | — | — | — | — | — |
| 5691 | -21.82 | 0.90 | 0.99 | 9.59 | 0.95 | 1.08 |
| 5692 | -21.62 | 0.92 | 1.01 | 9.68 | 0.97 | 1.07 |
| 5693 | -20.91 | 0.97 | 1.05 | 10.06 | 1.00 | 1.05 |
| 5694 | -20.83 | 0.97 | 1.05 | 10.11 | 1.00 | 1.05 |
| 5695 | -20.75 | 0.98 | 1.05 | 10.16 | 1.00 | 1.05 |
| 5696 | -20.66 | 0.98 | 1.05 | 10.21 | 1.01 | 1.05 |
| 5697 | -20.58 | 0.98 | 1.05 | 10.25 | 1.01 | 1.05 |
| 5698 | -20.50 | 0.98 | 1.05 | 10.28 | 1.01 | 1.05 |
| 5699 | -20.43 | 0.98 | 1.05 | 10.30 | 1.01 | 1.05 |
| 5700 | -20.36 | 0.98 | 1.05 | 10.31 | 1.01 | 1.05 |
| 5701 | -20.31 | 0.98 | 1.04 | 10.30 | 1.01 | 1.05 |
| 5702 | -20.27 | 0.98 | 1.04 | 10.25 | 1.01 | 1.05 |
| 5703 | -20.24 | 0.97 | 1.04 | 10.18 | 1.01 | 1.05 |
| 5704 | -22.21 | 0.86 | 0.94 | 9.63 | 0.93 | 1.11 |
| 5705 | — | — | — | — | — | — |
| 5706 | — | — | — | — | — | — |
| 5707 | -22.15 | 0.86 | 0.95 | 9.69 | 0.93 | 1.10 |
| 5708 | -21.89 | 0.89 | 0.97 | 9.92 | 0.94 | 1.09 |
| 5709 | -21.11 | 0.93 | 1.00 | 10.57 | 0.97 | 1.07 |
| 5710 | -21.02 | 0.93 | 1.00 | 10.64 | 0.98 | 1.07 |
| 5711 | -20.93 | 0.94 | 1.01 | 10.70 | 0.98 | 1.07 |
| 5712 | -20.85 | 0.94 | 1.01 | 10.76 | 0.98 | 1.07 |
| 5713 | -20.77 | 0.94 | 1.01 | 10.81 | 0.98 | 1.07 |
| 5714 | -20.69 | 0.94 | 1.01 | 10.85 | 0.98 | 1.07 |
| 5715 | -20.62 | 0.94 | 1.00 | 10.88 | 0.98 | 1.07 |
| 5716 | -20.56 | 0.94 | 1.00 | 10.89 | 0.98 | 1.07 |
| 5717 | -20.51 | 0.94 | 1.00 | 10.87 | 0.98 | 1.07 |
| 5718 | -20.47 | 0.94 | 1.00 | 10.83 | 0.98 | 1.07 |
| 5719 | -20.45 | 0.93 | 0.99 | 10.75 | 0.98 | 1.07 |
| 5720 | -22.64 | 0.82 | 0.90 | 9.54 | 0.90 | 1.12 |
| 5721 | — | — | — | — | — | — |
| 5722 | — | — | — | — | — | — |
| 5723 | -22.56 | 0.83 | 0.91 | 9.65 | 0.90 | 1.12 |
| 5724 | -22.24 | 0.85 | 0.93 | 10.03 | 0.92 | 1.11 |
| 5725 | -21.37 | 0.89 | 0.96 | 10.95 | 0.95 | 1.09 |

[Table 594]

627

| 5726 | -21.28 | 0.89 | 0.96 | 11.04 | 0.95 | 1.09 |
|------|--------|------|------|-------|------|------|
| 5727 | -21.19 | 0.90 | 0.96 | 11.12 | 0.95 | 1.09 |
| 5728 | -21.10 | 0.90 | 0.96 | 11.19 | 0.95 | 1.08 |
| 5729 | -21.02 | 0.90 | 0.96 | 11.25 | 0.96 | 1.08 |
| 5730 | -20.95 | 0.90 | 0.96 | 11.30 | 0.96 | 1.08 |
| 5731 | -20.88 | 0.90 | 0.96 | 11.33 | 0.96 | 1.08 |
| 5732 | -20.82 | 0.90 | 0.96 | 11.34 | 0.96 | 1.08 |
| 5733 | -20.78 | 0.90 | 0.96 | 11.33 | 0.96 | 1.09 |
| 5734 | -20.75 | 0.90 | 0.95 | 11.28 | 0.96 | 1.09 |
| 5735 | -20.74 | 0.89 | 0.95 | 11.20 | 0.95 | 1.09 |
| 5736 | -23.13 | 0.79 | 0.86 | 9.31 | 0.87 | 1.14 |
| 5737 | – | – | – | – | – | – |
| 5738 | – | – | – | – | – | – |
| 5739 | -23.04 | 0.79 | 0.87 | 9.46 | 0.88 | 1.14 |
| 5740 | -22.66 | 0.81 | 0.89 | 10.00 | 0.89 | 1.12 |
| 5741 | -21.70 | 0.85 | 0.92 | 11.20 | 0.92 | 1.11 |
| 5742 | -21.61 | 0.85 | 0.92 | 11.31 | 0.92 | 1.10 |
| 5743 | -21.52 | 0.86 | 0.92 | 11.40 | 0.93 | 1.10 |
| 5744 | -21.43 | 0.86 | 0.92 | 11.49 | 0.93 | 1.10 |
| 5745 | -21.35 | 0.86 | 0.92 | 11.56 | 0.93 | 1.10 |
| 5746 | -21.27 | 0.86 | 0.92 | 11.62 | 0.93 | 1.10 |
| 5747 | -21.21 | 0.86 | 0.92 | 11.66 | 0.93 | 1.10 |
| 5748 | -21.15 | 0.86 | 0.92 | 11.68 | 0.93 | 1.10 |
| 5749 | -21.12 | 0.86 | 0.91 | 11.67 | 0.93 | 1.10 |
| 5750 | -21.09 | 0.86 | 0.91 | 11.62 | 0.93 | 1.10 |
| 5751 | -21.09 | 0.85 | 0.90 | 11.53 | 0.93 | 1.10 |
| 5752 | -23.71 | 0.75 | 0.82 | 8.92 | 0.85 | 1.15 |
| 5753 | – | – | – | – | – | – |
| 5754 | – | – | – | – | – | – |
| 5755 | -23.60 | 0.76 | 0.83 | 9.11 | 0.85 | 1.15 |
| 5756 | -23.16 | 0.78 | 0.85 | 9.81 | 0.87 | 1.14 |
| 5757 | -22.10 | 0.82 | 0.88 | 11.32 | 0.90 | 1.12 |
| 5758 | -22.00 | 0.82 | 0.88 | 11.44 | 0.90 | 1.12 |
| 5759 | -21.91 | 0.82 | 0.88 | 11.55 | 0.90 | 1.12 |
| 5760 | -21.82 | 0.82 | 0.88 | 11.66 | 0.90 | 1.12 |
| 5761 | -21.74 | 0.82 | 0.88 | 11.74 | 0.90 | 1.12 |
| 5762 | -21.67 | 0.82 | 0.88 | 11.82 | 0.90 | 1.12 |
| 5763 | -21.61 | 0.82 | 0.88 | 11.87 | 0.90 | 1.12 |
| 5764 | -21.56 | 0.82 | 0.88 | 11.89 | 0.90 | 1.12 |
| 5765 | -21.52 | 0.82 | 0.87 | 11.88 | 0.90 | 1.12 |
| 5766 | -21.51 | 0.82 | 0.87 | 11.84 | 0.90 | 1.12 |
| 5767 | -21.51 | 0.81 | 0.86 | 11.74 | 0.90 | 1.12 |
| 5768 | -24.38 | 0.72 | 0.79 | 8.37 | 0.82 | 1.17 |
| 5769 | – | – | – | – | – | – |
| 5770 | -24.24 | 0.72 | 0.79 | 8.60 | 0.82 | 1.17 |
| 5771 | -23.73 | 0.74 | 0.81 | 9.47 | 0.84 | 1.16 |
| 5772 | -22.57 | 0.78 | 0.84 | 11.29 | 0.87 | 1.14 |
| 5773 | -22.47 | 0.78 | 0.84 | 11.44 | 0.87 | 1.14 |
| 5774 | -22.38 | 0.78 | 0.84 | 11.57 | 0.87 | 1.14 |
| 5775 | -22.29 | 0.78 | 0.84 | 11.69 | 0.88 | 1.14 |

[Table 595]

| | | | | | |
|---|---|---|---|---|---|
| 5776 | -22.20 | 0.78 | 0.84 | 11.79 | 0.88 | 1.14 |
| 5777 | -22.13 | 0.79 | 0.84 | 11.88 | 0.88 | 1.14 |
| 5778 | -22.07 | 0.79 | 0.84 | 11.94 | 0.88 | 1.14 |
| 5779 | -22.02 | 0.78 | 0.84 | 11.97 | 0.88 | 1.14 |
| 5780 | -21.99 | 0.78 | 0.83 | 11.97 | 0.88 | 1.14 |
| 5781 | -21.98 | 0.78 | 0.83 | 11.92 | 0.87 | 1.14 |
| 5782 | -22.00 | 0.78 | 0.82 | 11.82 | 0.87 | 1.14 |
| 5783 | -20.28 | 1.21 | 1.34 | 6.61 | 1.15 | 0.97 |
| 5784 | – | – | – | – | – | – |
| 5785 | – | – | – | – | – | – |
| 5786 | -20.40 | 1.22 | 1.35 | 6.33 | 1.15 | 0.97 |
| 5787 | -20.97 | 1.27 | 1.40 | 5.03 | 1.18 | 0.95 |
| 5788 | -21.21 | 1.34 | 1.48 | 3.62 | 1.23 | 0.93 |
| 5789 | -21.15 | 1.35 | 1.48 | 3.58 | 1.23 | 0.93 |
| 5790 | -21.08 | 1.35 | 1.49 | 3.56 | 1.23 | 0.93 |
| 5791 | -20.99 | 1.35 | 1.49 | 3.55 | 1.24 | 0.93 |
| 5792 | -20.90 | 1.36 | 1.49 | 3.55 | 1.24 | 0.93 |
| 5793 | -20.80 | 1.36 | 1.49 | 3.55 | 1.24 | 0.93 |
| 5794 | -20.69 | 1.36 | 1.49 | 3.57 | 1.25 | 0.94 |
| 5795 | -20.58 | 1.36 | 1.49 | 3.58 | 1.25 | 0.94 |
| 5796 | -20.47 | 1.36 | 1.49 | 3.59 | 1.25 | 0.94 |
| 5797 | -20.36 | 1.36 | 1.48 | 3.59 | 1.25 | 0.94 |
| 5798 | -20.25 | 1.35 | 1.48 | 3.58 | 1.26 | 0.94 |
| 5799 | -20.10 | 1.16 | 1.29 | 7.58 | 1.13 | 0.99 |
| 5800 | – | – | – | – | – | – |
| 5801 | – | – | – | – | – | – |
| 5802 | -20.19 | 1.17 | 1.30 | 7.34 | 1.13 | 0.99 |
| 5803 | -20.60 | 1.22 | 1.35 | 6.25 | 1.16 | 0.97 |
| 5804 | -20.65 | 1.29 | 1.42 | 5.08 | 1.20 | 0.95 |
| 5805 | -20.59 | 1.29 | 1.42 | 5.05 | 1.20 | 0.95 |
| 5806 | -20.51 | 1.30 | 1.42 | 5.03 | 1.21 | 0.95 |
| 5807 | -20.43 | 1.30 | 1.43 | 5.03 | 1.21 | 0.95 |
| 5808 | -20.34 | 1.30 | 1.43 | 5.03 | 1.21 | 0.95 |
| 5809 | -20.24 | 1.31 | 1.43 | 5.04 | 1.22 | 0.95 |
| 5810 | -20.14 | 1.31 | 1.43 | 5.05 | 1.22 | 0.95 |
| 5811 | -20.04 | 1.31 | 1.42 | 5.05 | 1.22 | 0.95 |
| 5812 | -19.94 | 1.31 | 1.42 | 5.06 | 1.22 | 0.95 |
| 5813 | -19.84 | 1.30 | 1.42 | 5.05 | 1.22 | 0.95 |
| 5814 | -19.74 | 1.30 | 1.41 | 5.03 | 1.23 | 0.96 |
| 5815 | -20.01 | 1.12 | 1.24 | 8.43 | 1.11 | 1.01 |
| 5816 | – | – | – | – | – | – |
| 5817 | – | – | – | – | – | – |
| 5818 | -20.07 | 1.13 | 1.25 | 8.24 | 1.11 | 1.00 |
| 5819 | -20.34 | 1.17 | 1.29 | 7.34 | 1.13 | 0.99 |
| 5820 | -20.23 | 1.24 | 1.36 | 6.41 | 1.17 | 0.97 |
| 5821 | -20.16 | 1.24 | 1.36 | 6.39 | 1.18 | 0.97 |
| 5822 | -20.08 | 1.25 | 1.36 | 6.38 | 1.18 | 0.96 |
| 5823 | -20.00 | 1.25 | 1.36 | 6.38 | 1.18 | 0.96 |
| 5824 | -19.91 | 1.25 | 1.37 | 6.39 | 1.19 | 0.96 |
| 5825 | -19.82 | 1.26 | 1.37 | 6.40 | 1.19 | 0.96 |

[Table 596]

| 5826 | -19.72 | 1.26 | 1.37 | 6.40 | 1.19 | 0.97 |
|---|---|---|---|---|---|---|
| 5827 | -19.63 | 1.26 | 1.36 | 6.41 | 1.19 | 0.97 |
| 5828 | -19.53 | 1.26 | 1.36 | 6.41 | 1.20 | 0.97 |
| 5829 | -19.44 | 1.25 | 1.36 | 6.39 | 1.20 | 0.97 |
| 5830 | -19.36 | 1.25 | 1.35 | 6.36 | 1.20 | 0.97 |
| 5831 | -19.98 | 1.08 | 1.19 | 9.17 | 1.09 | 1.03 |
| 5832 | — | — | — | — | — | — |
| 5833 | — | — | — | — | — | — |
| 5834 | -20.02 | 1.09 | 1.20 | 9.02 | 1.09 | 1.02 |
| 5835 | -20.17 | 1.13 | 1.24 | 8.32 | 1.11 | 1.01 |
| 5836 | -19.92 | 1.19 | 1.30 | 7.62 | 1.15 | 0.98 |
| 5837 | -19.85 | 1.19 | 1.30 | 7.61 | 1.15 | 0.98 |
| 5838 | -19.77 | 1.20 | 1.31 | 7.61 | 1.15 | 0.98 |
| 5839 | -19.69 | 1.20 | 1.31 | 7.62 | 1.16 | 0.98 |
| 5840 | -19.60 | 1.20 | 1.31 | 7.62 | 1.16 | 0.98 |
| 5841 | -19.51 | 1.21 | 1.31 | 7.64 | 1.16 | 0.98 |
| 5842 | -19.42 | 1.21 | 1.31 | 7.64 | 1.16 | 0.98 |
| 5843 | -19.33 | 1.21 | 1.31 | 7.65 | 1.17 | 0.98 |
| 5844 | -19.25 | 1.21 | 1.30 | 7.64 | 1.17 | 0.98 |
| 5845 | -19.16 | 1.20 | 1.30 | 7.62 | 1.17 | 0.99 |
| 5846 | -19.09 | 1.20 | 1.29 | 7.58 | 1.17 | 0.99 |
| 5847 | -20.03 | 1.04 | 1.15 | 9.79 | 1.07 | 1.05 |
| 5848 | — | — | — | — | — | — |
| 5849 | — | — | — | — | — | — |
| 5850 | -20.05 | 1.05 | 1.16 | 9.68 | 1.07 | 1.04 |
| 5851 | -20.09 | 1.09 | 1.19 | 9.16 | 1.09 | 1.03 |
| 5852 | -19.72 | 1.14 | 1.25 | 8.71 | 1.12 | 1.00 |
| 5853 | -19.64 | 1.15 | 1.25 | 8.71 | 1.13 | 1.00 |
| 5854 | -19.57 | 1.15 | 1.25 | 8.72 | 1.13 | 1.00 |
| 5855 | -19.48 | 1.15 | 1.25 | 8.73 | 1.13 | 1.00 |
| 5856 | -19.40 | 1.16 | 1.25 | 8.75 | 1.13 | 1.00 |
| 5857 | -19.31 | 1.16 | 1.25 | 8.76 | 1.14 | 1.00 |
| 5858 | -19.22 | 1.16 | 1.25 | 8.77 | 1.14 | 1.00 |
| 5859 | -19.14 | 1.16 | 1.25 | 8.77 | 1.14 | 1.00 |
| 5860 | -19.06 | 1.16 | 1.25 | 8.76 | 1.14 | 1.00 |
| 5861 | -18.99 | 1.16 | 1.24 | 8.74 | 1.14 | 1.00 |
| 5862 | -18.93 | 1.15 | 1.24 | 8.69 | 1.14 | 1.00 |
| 5863 | -20.14 | 1.00 | 1.11 | 10.28 | 1.04 | 1.07 |
| 5864 | — | — | — | — | — | — |
| 5865 | — | — | — | — | — | — |
| 5866 | -20.14 | 1.01 | 1.11 | 10.21 | 1.05 | 1.06 |
| 5867 | -20.09 | 1.04 | 1.15 | 9.89 | 1.07 | 1.04 |
| 5868 | -19.61 | 1.10 | 1.20 | 9.68 | 1.10 | 1.02 |
| 5869 | -19.53 | 1.10 | 1.20 | 9.69 | 1.10 | 1.02 |
| 5870 | -19.45 | 1.11 | 1.20 | 9.71 | 1.10 | 1.02 |
| 5871 | -19.37 | 1.11 | 1.20 | 9.73 | 1.11 | 1.02 |
| 5872 | -19.29 | 1.11 | 1.20 | 9.75 | 1.11 | 1.02 |
| 5873 | -19.20 | 1.11 | 1.20 | 9.77 | 1.11 | 1.02 |
| 5874 | -19.12 | 1.11 | 1.20 | 9.78 | 1.11 | 1.02 |
| 5875 | -19.04 | 1.11 | 1.20 | 9.78 | 1.11 | 1.02 |

[Table 597]

| 5876 | -18.97 | 1.11 | 1.20 | 9.77 | 1.11 | 1.02 |
|------|--------|------|------|------|------|------|
| 5877 | -18.91 | 1.11 | 1.19 | 9.74 | 1.11 | 1.02 |
| 5878 | -18.86 | 1.11 | 1.19 | 9.68 | 1.11 | 1.02 |
| 5879 | -20.31 | 0.96 | 1.06 | 10.67 | 1.02 | 1.09 |
| 5880 | – | – | – | – | – | – |
| 5881 | – | – | – | – | – | – |
| 5882 | -20.29 | 0.97 | 1.07 | 10.64 | 1.03 | 1.08 |
| 5883 | -20.16 | 1.00 | 1.10 | 10.49 | 1.04 | 1.06 |
| 5884 | -19.59 | 1.06 | 1.15 | 10.52 | 1.08 | 1.04 |
| 5885 | -19.51 | 1.06 | 1.15 | 10.55 | 1.08 | 1.04 |
| 5886 | -19.43 | 1.06 | 1.15 | 10.58 | 1.08 | 1.04 |
| 5887 | -19.34 | 1.06 | 1.15 | 10.61 | 1.08 | 1.04 |
| 5888 | -19.26 | 1.07 | 1.15 | 10.64 | 1.08 | 1.04 |
| 5889 | -19.18 | 1.07 | 1.15 | 10.67 | 1.09 | 1.04 |
| 5890 | -19.10 | 1.07 | 1.15 | 10.68 | 1.09 | 1.04 |
| 5891 | -19.03 | 1.07 | 1.15 | 10.68 | 1.09 | 1.04 |
| 5892 | -18.96 | 1.07 | 1.15 | 10.67 | 1.09 | 1.04 |
| 5893 | -18.91 | 1.06 | 1.14 | 10.63 | 1.09 | 1.04 |
| 5894 | -18.87 | 1.06 | 1.14 | 10.57 | 1.09 | 1.04 |
| 5895 | -20.55 | 0.93 | 1.03 | 10.93 | 1.00 | 1.11 |
| 5896 | – | – | – | – | – | – |
| 5897 | – | – | – | – | – | – |
| 5898 | -20.51 | 0.93 | 1.03 | 10.94 | 1.00 | 1.10 |
| 5899 | -20.30 | 0.96 | 1.06 | 10.98 | 1.02 | 1.08 |
| 5900 | -19.64 | 1.01 | 1.10 | 11.26 | 1.05 | 1.06 |
| 5901 | -19.56 | 1.02 | 1.10 | 11.30 | 1.05 | 1.06 |
| 5902 | -19.48 | 1.02 | 1.10 | 11.35 | 1.06 | 1.06 |
| 5903 | -19.39 | 1.02 | 1.10 | 11.39 | 1.06 | 1.06 |
| 5904 | -19.31 | 1.02 | 1.10 | 11.43 | 1.06 | 1.06 |
| 5905 | -19.23 | 1.02 | 1.10 | 11.45 | 1.06 | 1.05 |
| 5906 | -19.16 | 1.02 | 1.10 | 11.47 | 1.06 | 1.05 |
| 5907 | -19.09 | 1.02 | 1.10 | 11.48 | 1.06 | 1.06 |
| 5908 | -19.03 | 1.02 | 1.10 | 11.46 | 1.06 | 1.06 |
| 5909 | -18.99 | 1.02 | 1.09 | 11.42 | 1.06 | 1.06 |
| 5910 | -18.95 | 1.02 | 1.09 | 11.35 | 1.06 | 1.06 |
| 5911 | -20.84 | 0.89 | 0.99 | 11.06 | 0.98 | 1.13 |
| 5912 | – | – | – | – | – | – |
| 5913 | -20.79 | 0.90 | 0.99 | 11.11 | 0.98 | 1.12 |
| 5914 | -20.51 | 0.93 | 1.02 | 11.34 | 1.00 | 1.10 |
| 5915 | -19.77 | 0.97 | 1.06 | 11.88 | 1.03 | 1.08 |
| 5916 | -19.68 | 0.98 | 1.06 | 11.94 | 1.03 | 1.08 |
| 5917 | -19.60 | 0.98 | 1.06 | 12.00 | 1.03 | 1.08 |
| 5918 | -19.52 | 0.98 | 1.06 | 12.05 | 1.03 | 1.08 |
| 5919 | -19.44 | 0.98 | 1.06 | 12.09 | 1.03 | 1.07 |
| 5920 | -19.36 | 0.98 | 1.06 | 12.13 | 1.04 | 1.07 |
| 5921 | -19.29 | 0.98 | 1.06 | 12.15 | 1.04 | 1.07 |
| 5922 | -19.23 | 0.98 | 1.06 | 12.16 | 1.04 | 1.07 |
| 5923 | -19.17 | 0.98 | 1.05 | 12.14 | 1.04 | 1.07 |
| 5924 | -19.14 | 0.98 | 1.05 | 12.10 | 1.04 | 1.08 |
| 5925 | -19.11 | 0.98 | 1.04 | 12.02 | 1.03 | 1.08 |

[Table 598]

EP 4 442 787 A1

| 5926 | -21.13 | 0.86 | 0.95 | 11.16 | 0.96 | 1.14 |
| 5927 | – | – | – | – | – | – |
| 5928 | -21.06 | 0.87 | 0.96 | 11.24 | 0.96 | 1.14 |
| 5929 | -20.78 | 0.89 | 0.98 | 11.57 | 0.98 | 1.12 |
| 5930 | -19.96 | 0.93 | 1.01 | 12.38 | 1.00 | 1.10 |
| 5931 | -19.87 | 0.94 | 1.02 | 12.46 | 1.01 | 1.10 |
| 5932 | -19.79 | 0.94 | 1.02 | 12.53 | 1.01 | 1.10 |
| 5933 | -19.70 | 0.94 | 1.02 | 12.59 | 1.01 | 1.10 |
| 5934 | -19.63 | 0.94 | 1.02 | 12.65 | 1.01 | 1.09 |
| 5935 | -19.55 | 0.94 | 1.02 | 12.69 | 1.01 | 1.09 |
| 5936 | -19.49 | 0.94 | 1.01 | 12.72 | 1.01 | 1.09 |
| 5937 | -19.43 | 0.94 | 1.01 | 12.73 | 1.01 | 1.09 |
| 5938 | -19.38 | 0.94 | 1.01 | 12.72 | 1.01 | 1.09 |
| 5939 | -19.35 | 0.94 | 1.01 | 12.67 | 1.01 | 1.09 |
| 5940 | -19.34 | 0.94 | 1.00 | 12.59 | 1.01 | 1.10 |
| 5941 | -21.53 | 0.83 | 0.92 | 11.06 | 0.94 | 1.16 |
| 5942 | – | – | – | – | – | – |
| 5943 | – | – | – | – | – | – |
| 5944 | -21.45 | 0.83 | 0.92 | 11.19 | 0.94 | 1.16 |
| 5945 | -21.11 | 0.85 | 0.94 | 11.67 | 0.95 | 1.14 |
| 5946 | -20.22 | 0.89 | 0.97 | 12.76 | 0.98 | 1.12 |
| 5947 | -20.13 | 0.90 | 0.97 | 12.85 | 0.98 | 1.12 |
| 5948 | -20.04 | 0.90 | 0.98 | 12.94 | 0.98 | 1.12 |
| 5949 | -19.96 | 0.90 | 0.98 | 13.02 | 0.99 | 1.12 |
| 5950 | -19.88 | 0.90 | 0.98 | 13.09 | 0.99 | 1.12 |
| 5951 | -19.81 | 0.90 | 0.97 | 13.14 | 0.99 | 1.11 |
| 5952 | -19.75 | 0.90 | 0.97 | 13.18 | 0.99 | 1.11 |
| 5953 | -19.69 | 0.90 | 0.97 | 13.19 | 0.99 | 1.11 |
| 5954 | -19.65 | 0.90 | 0.97 | 13.18 | 0.99 | 1.11 |
| 5955 | -19.63 | 0.90 | 0.96 | 13.13 | 0.98 | 1.11 |
| 5956 | -19.62 | 0.90 | 0.96 | 13.04 | 0.98 | 1.11 |
| 5957 | -22.00 | 0.79 | 0.88 | 10.82 | 0.91 | 1.18 |
| 5958 | – | – | – | – | – | – |
| 5959 | – | – | – | – | – | – |
| 5960 | -21.90 | 0.80 | 0.89 | 10.99 | 0.92 | 1.18 |
| 5961 | -21.51 | 0.82 | 0.90 | 11.63 | 0.93 | 1.17 |
| 5962 | -20.54 | 0.86 | 0.93 | 13.01 | 0.96 | 1.14 |
| 5963 | -20.44 | 0.86 | 0.93 | 13.12 | 0.96 | 1.14 |
| 5964 | -20.36 | 0.86 | 0.94 | 13.23 | 0.96 | 1.14 |
| 5965 | -20.27 | 0.86 | 0.94 | 13.33 | 0.96 | 1.14 |
| 5966 | -20.20 | 0.86 | 0.94 | 13.41 | 0.96 | 1.14 |
| 5967 | -20.13 | 0.87 | 0.93 | 13.47 | 0.96 | 1.14 |
| 5968 | -20.07 | 0.87 | 0.93 | 13.52 | 0.96 | 1.14 |
| 5969 | -20.02 | 0.86 | 0.93 | 13.54 | 0.96 | 1.13 |
| 5970 | -19.98 | 0.86 | 0.93 | 13.53 | 0.96 | 1.13 |
| 5971 | -19.96 | 0.86 | 0.92 | 13.48 | 0.96 | 1.13 |
| 5972 | -19.97 | 0.86 | 0.92 | 13.38 | 0.96 | 1.13 |
| 5973 | -22.54 | 0.76 | 0.85 | 10.43 | 0.89 | 1.20 |
| 5974 | – | – | – | – | – | – |
| 5975 | – | – | – | – | – | – |

[Table 599]

632

| 5976 | -22.43 | 0.76 | 0.85 | 10.64 | 0.89 | 1.20 |
| 5977 | -21.98 | 0.78 | 0.87 | 11.44 | 0.91 | 1.19 |
| 5978 | -20.92 | 0.82 | 0.90 | 13.13 | 0.93 | 1.16 |
| 5979 | -20.82 | 0.82 | 0.90 | 13.27 | 0.93 | 1.16 |
| 5980 | -20.73 | 0.83 | 0.90 | 13.39 | 0.94 | 1.16 |
| 5981 | -20.65 | 0.83 | 0.90 | 13.51 | 0.94 | 1.16 |
| 5982 | -20.57 | 0.83 | 0.90 | 13.60 | 0.94 | 1.16 |
| 5983 | -20.50 | 0.83 | 0.90 | 13.68 | 0.94 | 1.16 |
| 5984 | -20.45 | 0.83 | 0.89 | 13.74 | 0.94 | 1.16 |
| 5985 | -20.40 | 0.83 | 0.89 | 13.76 | 0.94 | 1.16 |
| 5986 | -20.37 | 0.83 | 0.89 | 13.76 | 0.94 | 1.16 |
| 5987 | -20.36 | 0.82 | 0.88 | 13.71 | 0.93 | 1.16 |
| 5988 | -20.38 | 0.82 | 0.88 | 13.61 | 0.93 | 1.15 |
| 5989 | -19.18 | 1.24 | 1.37 | 7.65 | 1.18 | 0.98 |
| 5990 | — | — | — | — | — | — |
| 5991 | — | — | — | — | — | — |
| 5992 | -19.31 | 1.25 | 1.39 | 7.35 | 1.19 | 0.97 |
| 5993 | -20.05 | 1.31 | 1.45 | 5.69 | 1.22 | 0.95 |
| 5994 | -20.34 | 1.38 | 1.53 | 4.16 | 1.27 | 0.93 |
| 5995 | -20.28 | 1.39 | 1.54 | 4.11 | 1.27 | 0.93 |
| 5996 | -20.21 | 1.39 | 1.54 | 4.08 | 1.27 | 0.93 |
| 5997 | -20.13 | 1.40 | 1.54 | 4.06 | 1.28 | 0.93 |
| 5998 | -20.04 | 1.40 | 1.55 | 4.05 | 1.28 | 0.93 |
| 5999 | -19.94 | 1.40 | 1.55 | 4.05 | 1.29 | 0.93 |
| 6000 | -19.83 | 1.40 | 1.55 | 4.06 | 1.29 | 0.93 |
| 6001 | -19.72 | 1.41 | 1.55 | 4.07 | 1.29 | 0.93 |
| 6002 | -19.60 | 1.40 | 1.54 | 4.08 | 1.29 | 0.94 |
| 6003 | -19.48 | 1.40 | 1.54 | 4.08 | 1.30 | 0.94 |
| 6004 | -19.37 | 1.40 | 1.53 | 4.07 | 1.30 | 0.94 |
| 6005 | -18.99 | 1.19 | 1.32 | 8.65 | 1.16 | 1.00 |
| 6006 | — | — | — | — | — | — |
| 6007 | — | — | — | — | — | — |
| 6008 | -19.09 | 1.20 | 1.33 | 8.40 | 1.17 | 0.99 |
| 6009 | -19.63 | 1.26 | 1.40 | 6.99 | 1.20 | 0.97 |
| 6010 | -19.73 | 1.33 | 1.47 | 5.69 | 1.24 | 0.95 |
| 6011 | -19.67 | 1.34 | 1.47 | 5.65 | 1.24 | 0.95 |
| 6012 | -19.60 | 1.34 | 1.48 | 5.63 | 1.25 | 0.95 |
| 6013 | -19.51 | 1.35 | 1.48 | 5.61 | 1.25 | 0.95 |
| 6014 | -19.42 | 1.35 | 1.48 | 5.61 | 1.26 | 0.95 |
| 6015 | -19.33 | 1.35 | 1.48 | 5.61 | 1.26 | 0.95 |
| 6016 | -19.22 | 1.35 | 1.48 | 5.62 | 1.26 | 0.95 |
| 6017 | -19.12 | 1.35 | 1.48 | 5.62 | 1.26 | 0.95 |
| 6018 | -19.01 | 1.35 | 1.48 | 5.63 | 1.27 | 0.95 |
| 6019 | -18.91 | 1.35 | 1.47 | 5.62 | 1.27 | 0.95 |
| 6020 | -18.80 | 1.35 | 1.47 | 5.60 | 1.27 | 0.95 |
| 6021 | -18.88 | 1.15 | 1.28 | 9.54 | 1.15 | 1.02 |
| 6022 | — | — | — | — | — | — |
| 6023 | — | — | — | — | — | — |
| 6024 | -18.96 | 1.16 | 1.29 | 9.33 | 1.15 | 1.01 |
| 6025 | -19.32 | 1.21 | 1.34 | 8.16 | 1.18 | 0.99 |

[Table 600]

EP 4 442 787 A1

| 6026 | -19.26 | 1.28 | 1.41 | 7.11 | 1.22 | 0.97 |
|---|---|---|---|---|---|---|
| 6027 | -19.19 | 1.29 | 1.41 | 7.08 | 1.22 | 0.97 |
| 6028 | -19.12 | 1.29 | 1.42 | 7.06 | 1.22 | 0.96 |
| 6029 | -19.03 | 1.29 | 1.42 | 7.05 | 1.23 | 0.96 |
| 6030 | -18.95 | 1.30 | 1.42 | 7.05 | 1.23 | 0.96 |
| 6031 | -18.85 | 1.30 | 1.42 | 7.05 | 1.23 | 0.96 |
| 6032 | -18.76 | 1.30 | 1.42 | 7.06 | 1.23 | 0.96 |
| 6033 | -18.66 | 1.30 | 1.42 | 7.06 | 1.24 | 0.97 |
| 6034 | -18.56 | 1.30 | 1.41 | 7.06 | 1.24 | 0.97 |
| 6035 | -18.46 | 1.30 | 1.41 | 7.05 | 1.24 | 0.97 |
| 6036 | -18.37 | 1.30 | 1.41 | 7.02 | 1.24 | 0.97 |
| 6037 | -18.84 | 1.11 | 1.23 | 10.32 | 1.13 | 1.04 |
| 6038 | — | — | — | — | — | — |
| 6039 | -18.88 | 1.12 | 1.24 | 10.15 | 1.13 | 1.03 |
| 6040 | -19.11 | 1.17 | 1.29 | 9.22 | 1.16 | 1.01 |
| 6041 | -18.90 | 1.23 | 1.35 | 8.40 | 1.19 | 0.98 |
| 6042 | -18.83 | 1.24 | 1.36 | 8.38 | 1.20 | 0.98 |
| 6043 | -18.75 | 1.24 | 1.36 | 8.37 | 1.20 | 0.98 |
| 6044 | -18.67 | 1.25 | 1.36 | 8.37 | 1.20 | 0.98 |
| 6045 | -18.59 | 1.25 | 1.36 | 8.38 | 1.20 | 0.98 |
| 6046 | -18.50 | 1.25 | 1.36 | 8.38 | 1.21 | 0.98 |
| 6047 | -18.40 | 1.25 | 1.36 | 8.39 | 1.21 | 0.98 |
| 6048 | -18.31 | 1.25 | 1.36 | 8.39 | 1.21 | 0.98 |
| 6049 | -18.22 | 1.25 | 1.36 | 8.38 | 1.21 | 0.98 |
| 6050 | -18.14 | 1.25 | 1.35 | 8.36 | 1.21 | 0.99 |
| 6051 | -18.06 | 1.25 | 1.35 | 8.32 | 1.21 | 0.99 |
| 6052 | -18.88 | 1.08 | 1.20 | 10.86 | 1.11 | 1.05 |
| 6053 | — | — | — | — | — | — |
| 6054 | -18.91 | 1.09 | 1.21 | 10.74 | 1.12 | 1.05 |
| 6055 | -18.98 | 1.13 | 1.24 | 10.15 | 1.14 | 1.03 |
| 6056 | -18.65 | 1.19 | 1.30 | 9.58 | 1.17 | 1.00 |
| 6057 | -18.58 | 1.19 | 1.30 | 9.57 | 1.17 | 1.00 |
| 6058 | -18.50 | 1.19 | 1.30 | 9.57 | 1.17 | 1.00 |
| 6059 | -18.42 | 1.20 | 1.31 | 9.58 | 1.18 | 1.00 |
| 6060 | -18.33 | 1.20 | 1.31 | 9.59 | 1.18 | 1.00 |
| 6061 | -18.24 | 1.20 | 1.31 | 9.60 | 1.18 | 1.00 |
| 6062 | -18.16 | 1.20 | 1.31 | 9.60 | 1.18 | 1.00 |
| 6063 | -18.07 | 1.20 | 1.30 | 9.60 | 1.19 | 1.00 |
| 6064 | -17.99 | 1.20 | 1.30 | 9.59 | 1.19 | 1.00 |
| 6065 | -17.91 | 1.20 | 1.30 | 9.56 | 1.19 | 1.00 |
| 6066 | -17.84 | 1.20 | 1.29 | 9.52 | 1.19 | 1.00 |
| 6067 | -18.94 | 1.04 | 1.16 | 11.47 | 1.09 | 1.07 |
| 6068 | — | — | — | — | — | — |
| 6069 | — | — | — | — | — | — |
| 6070 | -18.94 | 1.05 | 1.16 | 11.38 | 1.10 | 1.07 |
| 6071 | -18.92 | 1.08 | 1.20 | 10.98 | 1.11 | 1.05 |
| 6072 | -18.49 | 1.14 | 1.25 | 10.64 | 1.15 | 1.02 |
| 6073 | -18.41 | 1.15 | 1.25 | 10.64 | 1.15 | 1.02 |
| 6074 | -18.33 | 1.15 | 1.25 | 10.66 | 1.15 | 1.02 |
| 6075 | -18.25 | 1.15 | 1.25 | 10.67 | 1.15 | 1.02 |

[Table 601]

| | | | | | |
|---|---|---|---|---|---|
| 6076 | -18.17 | 1.15 | 1.25 | 10.68 | 1.16 | 1.02 |
| 6077 | -18.08 | 1.16 | 1.25 | 10.69 | 1.16 | 1.02 |
| 6078 | -18.00 | 1.16 | 1.25 | 10.70 | 1.16 | 1.02 |
| 6079 | -17.93 | 1.16 | 1.25 | 10.70 | 1.16 | 1.02 |
| 6080 | -17.85 | 1.16 | 1.25 | 10.69 | 1.16 | 1.02 |
| 6081 | -17.78 | 1.15 | 1.24 | 10.65 | 1.16 | 1.02 |
| 6082 | -17.72 | 1.15 | 1.24 | 10.60 | 1.16 | 1.02 |
| 6083 | -19.05 | 1.00 | 1.12 | 11.96 | 1.07 | 1.10 |
| 6084 | – | – | – | – | – | – |
| 6085 | – | – | – | – | – | – |
| 6086 | -19.03 | 1.01 | 1.12 | 11.91 | 1.08 | 1.09 |
| 6087 | -18.94 | 1.04 | 1.15 | 11.69 | 1.09 | 1.07 |
| 6088 | -18.41 | 1.10 | 1.20 | 11.59 | 1.12 | 1.04 |
| 6089 | -18.33 | 1.10 | 1.20 | 11.61 | 1.13 | 1.04 |
| 6090 | -18.26 | 1.10 | 1.20 | 11.63 | 1.13 | 1.04 |
| 6091 | -18.17 | 1.11 | 1.20 | 11.65 | 1.13 | 1.04 |
| 6092 | -18.09 | 1.11 | 1.20 | 11.68 | 1.13 | 1.04 |
| 6093 | -18.01 | 1.11 | 1.20 | 11.69 | 1.13 | 1.04 |
| 6094 | -17.93 | 1.11 | 1.20 | 11.70 | 1.14 | 1.04 |
| 6095 | -17.86 | 1.11 | 1.20 | 11.70 | 1.14 | 1.04 |
| 6096 | -17.79 | 1.11 | 1.20 | 11.68 | 1.14 | 1.04 |
| 6097 | -17.73 | 1.11 | 1.20 | 11.65 | 1.14 | 1.04 |
| 6098 | -17.68 | 1.11 | 1.19 | 11.59 | 1.14 | 1.04 |
| 6099 | -19.22 | 0.97 | 1.08 | 12.33 | 1.05 | 1.12 |
| 6100 | – | – | – | – | – | – |
| 6101 | – | – | – | – | – | – |
| 6102 | -19.19 | 0.97 | 1.08 | 12.32 | 1.06 | 1.11 |
| 6103 | -19.02 | 1.00 | 1.11 | 12.28 | 1.07 | 1.09 |
| 6104 | -18.41 | 1.06 | 1.15 | 12.43 | 1.10 | 1.06 |
| 6105 | -18.33 | 1.06 | 1.16 | 12.47 | 1.10 | 1.06 |
| 6106 | -18.25 | 1.06 | 1.16 | 12.50 | 1.11 | 1.06 |
| 6107 | -18.17 | 1.06 | 1.16 | 12.53 | 1.11 | 1.06 |
| 6108 | -18.09 | 1.07 | 1.16 | 12.56 | 1.11 | 1.06 |
| 6109 | -18.01 | 1.07 | 1.16 | 12.58 | 1.11 | 1.06 |
| 6110 | -17.94 | 1.07 | 1.16 | 12.60 | 1.11 | 1.06 |
| 6111 | -17.87 | 1.07 | 1.15 | 12.60 | 1.11 | 1.06 |
| 6112 | -17.81 | 1.07 | 1.15 | 12.58 | 1.11 | 1.06 |
| 6113 | -17.76 | 1.06 | 1.15 | 12.54 | 1.11 | 1.06 |
| 6114 | -17.72 | 1.06 | 1.14 | 12.47 | 1.11 | 1.06 |
| 6115 | -19.43 | 0.93 | 1.04 | 12.59 | 1.03 | 1.14 |
| 6116 | – | – | – | – | – | – |
| 6117 | – | – | – | – | – | – |
| 6118 | -19.39 | 0.94 | 1.04 | 12.62 | 1.04 | 1.14 |
| 6119 | -19.16 | 0.97 | 1.07 | 12.76 | 1.05 | 1.12 |
| 6120 | -18.48 | 1.01 | 1.11 | 13.16 | 1.08 | 1.09 |
| 6121 | -18.40 | 1.02 | 1.11 | 13.21 | 1.08 | 1.08 |
| 6122 | -18.31 | 1.02 | 1.11 | 13.26 | 1.08 | 1.08 |
| 6123 | -18.23 | 1.02 | 1.11 | 13.30 | 1.08 | 1.08 |
| 6124 | -18.16 | 1.02 | 1.11 | 13.34 | 1.09 | 1.08 |
| 6125 | -18.08 | 1.03 | 1.11 | 13.37 | 1.09 | 1.08 |

[Table 602]

| 6126 | -18.01 | 1.03 | 1.11 | 13.39 | 1.09 | 1.08 |
|------|--------|------|------|-------|------|------|
| 6127 | -17.95 | 1.03 | 1.11 | 13.39 | 1.09 | 1.08 |
| 6128 | -17.89 | 1.02 | 1.11 | 13.37 | 1.09 | 1.08 |
| 6129 | -17.85 | 1.02 | 1.10 | 13.32 | 1.09 | 1.08 |
| 6130 | -17.82 | 1.02 | 1.10 | 13.25 | 1.08 | 1.08 |
| 6131 | -19.71 | 0.90 | 1.00 | 12.73 | 1.01 | 1.16 |
| 6132 | – | – | – | – | – | – |
| 6133 | – | – | – | – | – | – |
| 6134 | -19.65 | 0.90 | 1.01 | 12.80 | 1.02 | 1.16 |
| 6135 | -19.35 | 0.93 | 1.03 | 13.12 | 1.03 | 1.14 |
| 6136 | -18.60 | 0.98 | 1.07 | 13.78 | 1.06 | 1.11 |
| 6137 | -18.52 | 0.98 | 1.07 | 13.85 | 1.06 | 1.11 |
| 6138 | -18.44 | 0.98 | 1.07 | 13.91 | 1.06 | 1.10 |
| 6139 | -18.36 | 0.98 | 1.07 | 13.96 | 1.06 | 1.10 |
| 6140 | -18.28 | 0.98 | 1.07 | 14.01 | 1.06 | 1.10 |
| 6141 | -18.21 | 0.98 | 1.07 | 14.05 | 1.06 | 1.10 |
| 6142 | -18.14 | 0.99 | 1.07 | 14.07 | 1.06 | 1.10 |
| 6143 | -18.09 | 0.98 | 1.07 | 14.08 | 1.06 | 1.10 |
| 6144 | -18.04 | 0.98 | 1.06 | 14.06 | 1.06 | 1.10 |
| 6145 | -18.00 | 0.98 | 1.06 | 14.01 | 1.06 | 1.10 |
| 6146 | -17.98 | 0.98 | 1.05 | 13.93 | 1.06 | 1.10 |
| 6147 | -20.04 | 0.86 | 0.97 | 12.74 | 0.99 | 1.18 |
| 6148 | – | – | – | – | – | – |
| 6149 | – | – | – | – | – | – |
| 6150 | -19.97 | 0.87 | 0.97 | 12.85 | 1.00 | 1.18 |
| 6151 | -19.61 | 0.90 | 1.00 | 13.36 | 1.01 | 1.16 |
| 6152 | -18.79 | 0.94 | 1.03 | 14.29 | 1.04 | 1.13 |
| 6153 | -18.71 | 0.94 | 1.03 | 14.37 | 1.04 | 1.13 |
| 6154 | -18.62 | 0.94 | 1.03 | 14.45 | 1.04 | 1.13 |
| 6155 | -18.55 | 0.94 | 1.03 | 14.52 | 1.04 | 1.12 |
| 6156 | -18.47 | 0.95 | 1.03 | 14.58 | 1.04 | 1.12 |
| 6157 | -18.40 | 0.95 | 1.03 | 14.62 | 1.04 | 1.12 |
| 6158 | -18.34 | 0.95 | 1.03 | 14.65 | 1.04 | 1.12 |
| 6159 | -18.29 | 0.95 | 1.02 | 14.66 | 1.04 | 1.12 |
| 6160 | -18.24 | 0.94 | 1.02 | 14.64 | 1.04 | 1.12 |
| 6161 | -18.22 | 0.94 | 1.02 | 14.59 | 1.04 | 1.12 |
| 6162 | -18.21 | 0.94 | 1.01 | 14.51 | 1.04 | 1.12 |
| 6163 | -20.42 | 0.83 | 0.93 | 12.63 | 0.97 | 1.21 |
| 6164 | – | – | – | – | – | – |
| 6165 | – | – | – | – | – | – |
| 6166 | -20.34 | 0.83 | 0.94 | 12.77 | 0.98 | 1.20 |
| 6167 | -19.91 | 0.86 | 0.96 | 13.47 | 0.99 | 1.18 |
| 6168 | -19.03 | 0.90 | 0.99 | 14.68 | 1.01 | 1.15 |
| 6169 | -18.95 | 0.90 | 0.99 | 14.78 | 1.02 | 1.15 |
| 6170 | -18.87 | 0.90 | 0.99 | 14.88 | 1.02 | 1.15 |
| 6171 | -18.79 | 0.91 | 0.99 | 14.96 | 1.02 | 1.15 |
| 6172 | -18.72 | 0.91 | 0.99 | 15.03 | 1.02 | 1.15 |
| 6173 | -18.65 | 0.91 | 0.99 | 15.09 | 1.02 | 1.14 |
| 6174 | -18.59 | 0.91 | 0.99 | 15.13 | 1.02 | 1.14 |
| 6175 | -18.54 | 0.91 | 0.98 | 15.14 | 1.02 | 1.14 |

[Table 603]

| 6176 | -18.51 | 0.91 | 0.98 | 15.12 | 1.02 | 1.14 |
|------|--------|------|------|-------|------|------|
| 6177 | -18.49 | 0.90 | 0.98 | 15.07 | 1.01 | 1.14 |
| 6178 | -18.49 | 0.90 | 0.97 | 14.98 | 1.01 | 1.14 |
| 6179 | -23.69 | 1.04 | 1.13 | 4.45 | 0.98 | 0.96 |
| 6180 | — | — | — | — | — | — |
| 6181 | — | — | — | — | — | — |
| 6182 | -23.80 | 1.05 | 1.14 | 4.20 | 0.98 | 0.96 |
| 6183 | -24.21 | 1.08 | 1.17 | 3.25 | 1.00 | 0.95 |
| 6184 | -24.61 | 1.14 | 1.24 | 1.73 | 1.04 | 0.93 |
| 6185 | -24.58 | 1.15 | 1.24 | 1.67 | 1.04 | 0.93 |
| 6186 | -24.54 | 1.15 | 1.25 | 1.62 | 1.05 | 0.93 |
| 6187 | -24.49 | 1.15 | 1.25 | 1.58 | 1.05 | 0.93 |
| 6188 | -24.43 | 1.16 | 1.25 | 1.55 | 1.05 | 0.93 |
| 6189 | -24.36 | 1.16 | 1.25 | 1.53 | 1.05 | 0.93 |
| 6190 | -24.29 | 1.16 | 1.25 | 1.51 | 1.06 | 0.93 |
| 6191 | -24.22 | 1.16 | 1.24 | 1.49 | 1.06 | 0.93 |
| 6192 | -24.14 | 1.16 | 1.24 | 1.46 | 1.06 | 0.93 |
| 6193 | -24.07 | 1.16 | 1.24 | 1.43 | 1.06 | 0.94 |
| 6194 | -23.99 | 1.15 | 1.23 | 1.39 | 1.06 | 0.94 |
| 6195 | -23.75 | 1.00 | 1.08 | 5.07 | 0.95 | 0.97 |
| 6196 | — | — | — | — | — | — |
| 6197 | — | — | — | — | — | — |
| 6198 | -23.83 | 1.00 | 1.08 | 4.88 | 0.95 | 0.97 |
| 6199 | -24.11 | 1.03 | 1.12 | 4.12 | 0.97 | 0.96 |
| 6200 | -24.29 | 1.09 | 1.18 | 2.90 | 1.01 | 0.94 |
| 6201 | -24.25 | 1.10 | 1.18 | 2.85 | 1.01 | 0.94 |
| 6202 | -24.20 | 1.10 | 1.18 | 2.81 | 1.01 | 0.94 |
| 6203 | -24.15 | 1.10 | 1.18 | 2.78 | 1.02 | 0.94 |
| 6204 | -24.09 | 1.11 | 1.18 | 2.75 | 1.02 | 0.94 |
| 6205 | -24.02 | 1.11 | 1.18 | 2.73 | 1.02 | 0.94 |
| 6206 | -23.96 | 1.11 | 1.18 | 2.71 | 1.02 | 0.94 |
| 6207 | -23.89 | 1.11 | 1.18 | 2.68 | 1.02 | 0.94 |
| 6208 | -23.82 | 1.11 | 1.18 | 2.65 | 1.03 | 0.95 |
| 6209 | -23.76 | 1.10 | 1.17 | 2.62 | 1.03 | 0.95 |
| 6210 | -23.69 | 1.10 | 1.17 | 2.57 | 1.03 | 0.95 |
| 6211 | -23.91 | 0.95 | 1.03 | 5.56 | 0.92 | 0.99 |
| 6212 | — | — | — | — | — | — |
| 6213 | — | — | — | — | — | — |
| 6214 | -23.95 | 0.96 | 1.03 | 5.42 | 0.92 | 0.98 |
| 6215 | -24.11 | 0.99 | 1.06 | 4.84 | 0.94 | 0.97 |
| 6216 | -24.09 | 1.05 | 1.12 | 3.92 | 0.98 | 0.96 |
| 6217 | -24.05 | 1.05 | 1.12 | 3.88 | 0.98 | 0.95 |
| 6218 | -24.00 | 1.05 | 1.12 | 3.85 | 0.98 | 0.95 |
| 6219 | -23.94 | 1.05 | 1.12 | 3.83 | 0.98 | 0.95 |
| 6220 | -23.88 | 1.06 | 1.12 | 3.81 | 0.99 | 0.95 |
| 6221 | -23.82 | 1.06 | 1.12 | 3.79 | 0.99 | 0.95 |
| 6222 | -23.76 | 1.06 | 1.12 | 3.76 | 0.99 | 0.96 |
| 6223 | -23.70 | 1.06 | 1.12 | 3.74 | 0.99 | 0.96 |
| 6224 | -23.63 | 1.06 | 1.12 | 3.71 | 0.99 | 0.96 |
| 6225 | -23.58 | 1.05 | 1.11 | 3.66 | 0.99 | 0.96 |

[Table 604]

| 6226 | -23.53 | 1.05 | 1.11 | 3.60 | 0.99 | 0.96 |
|---|---|---|---|---|---|---|
| 6227 | -24.14 | 0.91 | 0.98 | 5.91 | 0.89 | 1.00 |
| 6228 | – | – | – | – | – | – |
| 6229 | – | – | – | – | – | – |
| 6230 | -24.16 | 0.92 | 0.99 | 5.81 | 0.90 | 1.00 |
| 6231 | -24.21 | 0.95 | 1.01 | 5.41 | 0.91 | 0.99 |
| 6232 | -24.03 | 1.00 | 1.06 | 4.79 | 0.95 | 0.97 |
| 6233 | -23.98 | 1.00 | 1.06 | 4.77 | 0.95 | 0.97 |
| 6234 | -23.92 | 1.00 | 1.07 | 4.75 | 0.95 | 0.97 |
| 6235 | -23.86 | 1.01 | 1.07 | 4.73 | 0.95 | 0.97 |
| 6236 | -23.80 | 1.01 | 1.07 | 4.72 | 0.96 | 0.97 |
| 6237 | -23.74 | 1.01 | 1.07 | 4.70 | 0.96 | 0.97 |
| 6238 | -23.68 | 1.01 | 1.07 | 4.68 | 0.96 | 0.97 |
| 6239 | -23.62 | 1.01 | 1.06 | 4.66 | 0.96 | 0.97 |
| 6240 | -23.57 | 1.01 | 1.06 | 4.62 | 0.96 | 0.97 |
| 6241 | -23.52 | 1.00 | 1.06 | 4.57 | 0.96 | 0.97 |
| 6242 | -23.48 | 1.00 | 1.05 | 4.51 | 0.96 | 0.97 |
| 6243 | -24.46 | 0.87 | 0.93 | 6.12 | 0.86 | 1.01 |
| 6244 | – | – | – | – | – | – |
| 6245 | – | – | – | – | – | – |
| 6246 | -24.45 | 0.88 | 0.94 | 6.07 | 0.87 | 1.01 |
| 6247 | -24.41 | 0.90 | 0.96 | 5.84 | 0.88 | 1.00 |
| 6248 | -24.08 | 0.95 | 1.01 | 5.51 | 0.92 | 0.98 |
| 6249 | -24.02 | 0.95 | 1.01 | 5.51 | 0.92 | 0.98 |
| 6250 | -23.96 | 0.96 | 1.01 | 5.50 | 0.92 | 0.98 |
| 6251 | -23.90 | 0.96 | 1.01 | 5.50 | 0.92 | 0.98 |
| 6252 | -23.84 | 0.96 | 1.01 | 5.49 | 0.92 | 0.98 |
| 6253 | -23.78 | 0.96 | 1.01 | 5.48 | 0.92 | 0.98 |
| 6254 | -23.72 | 0.96 | 1.01 | 5.46 | 0.93 | 0.98 |
| 6255 | -23.66 | 0.96 | 1.01 | 5.44 | 0.93 | 0.98 |
| 6256 | -23.61 | 0.96 | 1.01 | 5.40 | 0.93 | 0.98 |
| 6257 | -23.57 | 0.96 | 1.00 | 5.35 | 0.93 | 0.98 |
| 6258 | -23.54 | 0.96 | 1.00 | 5.27 | 0.92 | 0.98 |
| 6259 | -24.87 | 0.83 | 0.89 | 6.18 | 0.83 | 1.03 |
| 6260 | – | – | – | – | – | – |
| 6261 | – | – | – | – | – | – |
| 6262 | -24.84 | 0.84 | 0.89 | 6.17 | 0.84 | 1.02 |
| 6263 | -24.71 | 0.86 | 0.92 | 6.12 | 0.85 | 1.01 |
| 6264 | -24.23 | 0.91 | 0.96 | 6.09 | 0.88 | 1.00 |
| 6265 | -24.17 | 0.91 | 0.96 | 6.10 | 0.89 | 0.99 |
| 6266 | -24.10 | 0.91 | 0.96 | 6.11 | 0.89 | 0.99 |
| 6267 | -24.04 | 0.91 | 0.96 | 6.12 | 0.89 | 0.99 |
| 6268 | -23.98 | 0.92 | 0.96 | 6.12 | 0.89 | 0.99 |
| 6269 | -23.92 | 0.92 | 0.96 | 6.11 | 0.89 | 0.99 |
| 6270 | -23.86 | 0.92 | 0.96 | 6.10 | 0.89 | 0.99 |
| 6271 | -23.81 | 0.92 | 0.96 | 6.08 | 0.89 | 0.99 |
| 6272 | -23.76 | 0.91 | 0.95 | 6.04 | 0.89 | 1.00 |
| 6273 | -23.73 | 0.91 | 0.95 | 5.98 | 0.89 | 1.00 |
| 6274 | -23.70 | 0.91 | 0.95 | 5.90 | 0.89 | 1.00 |
| 6275 | -25.37 | 0.79 | 0.84 | 6.09 | 0.80 | 1.04 |

[Table 605]

| 6276 | — | — | — | — | — | — |
|---|---|---|---|---|---|---|
| 6277 | — | — | — | — | — | — |
| 6278 | -25.31 | 0.80 | 0.85 | 6.12 | 0.81 | 1.03 |
| 6279 | -25.10 | 0.82 | 0.87 | 6.24 | 0.82 | 1.02 |
| 6280 | -24.49 | 0.86 | 0.91 | 6.52 | 0.85 | 1.01 |
| 6281 | -24.42 | 0.87 | 0.91 | 6.54 | 0.86 | 1.01 |
| 6282 | -24.35 | 0.87 | 0.91 | 6.57 | 0.86 | 1.01 |
| 6283 | -24.28 | 0.87 | 0.91 | 6.59 | 0.86 | 1.01 |
| 6284 | -24.22 | 0.87 | 0.91 | 6.60 | 0.86 | 1.01 |
| 6285 | -24.16 | 0.87 | 0.91 | 6.61 | 0.86 | 1.01 |
| 6286 | -24.11 | 0.87 | 0.91 | 6.60 | 0.86 | 1.01 |
| 6287 | -24.06 | 0.87 | 0.91 | 6.58 | 0.86 | 1.01 |
| 6288 | -24.02 | 0.87 | 0.90 | 6.54 | 0.86 | 1.01 |
| 6289 | -23.99 | 0.87 | 0.90 | 6.48 | 0.86 | 1.01 |
| 6290 | -23.97 | 0.87 | 0.90 | 6.40 | 0.86 | 1.01 |
| 6291 | -25.96 | 0.75 | 0.80 | 5.84 | 0.77 | 1.05 |
| 6292 | — | — | — | — | — | — |
| 6293 | -25.88 | 0.76 | 0.80 | 5.92 | 0.78 | 1.04 |
| 6294 | -25.59 | 0.78 | 0.83 | 6.21 | 0.79 | 1.04 |
| 6295 | -24.84 | 0.82 | 0.86 | 6.79 | 0.82 | 1.02 |
| 6296 | -24.77 | 0.82 | 0.86 | 6.84 | 0.82 | 1.02 |
| 6297 | -24.69 | 0.83 | 0.86 | 6.88 | 0.83 | 1.02 |
| 6298 | -24.63 | 0.83 | 0.86 | 6.91 | 0.83 | 1.02 |
| 6299 | -24.56 | 0.83 | 0.86 | 6.94 | 0.83 | 1.02 |
| 6300 | -24.50 | 0.83 | 0.86 | 6.95 | 0.83 | 1.02 |
| 6301 | -24.44 | 0.83 | 0.86 | 6.95 | 0.83 | 1.02 |
| 6302 | -24.40 | 0.83 | 0.86 | 6.93 | 0.83 | 1.02 |
| 6303 | -24.36 | 0.83 | 0.86 | 6.90 | 0.83 | 1.02 |
| 6304 | -24.34 | 0.83 | 0.85 | 6.84 | 0.83 | 1.02 |
| 6305 | -24.33 | 0.82 | 0.85 | 6.75 | 0.83 | 1.02 |
| 6306 | -26.55 | 0.72 | 0.76 | 5.55 | 0.74 | 1.05 |
| 6307 | — | — | — | — | — | — |
| 6308 | -26.45 | 0.73 | 0.77 | 5.67 | 0.75 | 1.05 |
| 6309 | -26.18 | 0.74 | 0.78 | 6.01 | 0.76 | 1.05 |
| 6310 | -25.30 | 0.78 | 0.82 | 6.91 | 0.79 | 1.03 |
| 6311 | -25.22 | 0.78 | 0.82 | 6.97 | 0.79 | 1.03 |
| 6312 | -25.14 | 0.78 | 0.82 | 7.03 | 0.79 | 1.03 |
| 6313 | -25.07 | 0.79 | 0.82 | 7.08 | 0.80 | 1.03 |
| 6314 | -25.00 | 0.79 | 0.82 | 7.12 | 0.80 | 1.03 |
| 6315 | -24.94 | 0.79 | 0.82 | 7.14 | 0.80 | 1.03 |
| 6316 | -24.88 | 0.79 | 0.82 | 7.15 | 0.80 | 1.03 |
| 6317 | -24.84 | 0.79 | 0.81 | 7.14 | 0.80 | 1.03 |
| 6318 | -24.80 | 0.79 | 0.81 | 7.11 | 0.80 | 1.03 |
| 6319 | -24.78 | 0.78 | 0.81 | 7.05 | 0.80 | 1.03 |
| 6320 | -24.78 | 0.78 | 0.80 | 6.96 | 0.79 | 1.03 |
| 6321 | -27.32 | 0.68 | 0.72 | 5.02 | 0.71 | 1.06 |
| 6322 | — | — | — | — | — | — |
| 6323 | — | — | — | — | — | — |
| 6324 | -27.21 | 0.69 | 0.72 | 5.18 | 0.71 | 1.06 |
| 6325 | -26.87 | 0.70 | 0.74 | 5.64 | 0.73 | 1.05 |

[Table 606]

| 6326 | -25.85 | 0.74 | 0.77 | 6.86 | 0.76 | 1.04 |
|------|--------|------|------|------|------|------|
| 6327 | -25.76 | 0.74 | 0.77 | 6.95 | 0.76 | 1.04 |
| 6328 | -25.68 | 0.74 | 0.77 | 7.03 | 0.76 | 1.04 |
| 6329 | -25.60 | 0.75 | 0.77 | 7.09 | 0.76 | 1.04 |
| 6330 | -25.53 | 0.75 | 0.77 | 7.14 | 0.76 | 1.04 |
| 6331 | -25.47 | 0.75 | 0.77 | 7.18 | 0.77 | 1.04 |
| 6332 | -25.41 | 0.75 | 0.77 | 7.20 | 0.77 | 1.04 |
| 6333 | -25.37 | 0.75 | 0.77 | 7.19 | 0.77 | 1.04 |
| 6334 | -25.34 | 0.75 | 0.77 | 7.16 | 0.76 | 1.04 |
| 6335 | -25.32 | 0.74 | 0.76 | 7.11 | 0.76 | 1.04 |
| 6336 | -25.33 | 0.74 | 0.76 | 7.02 | 0.76 | 1.05 |
| 6337 | -28.22 | 0.65 | 0.68 | 4.32 | 0.67 | 1.06 |
| 6338 | – | – | – | – | – | – |
| 6339 | – | – | – | – | – | – |
| 6340 | -28.08 | 0.65 | 0.68 | 4.52 | 0.68 | 1.06 |
| 6341 | -27.67 | 0.67 | 0.70 | 5.10 | 0.69 | 1.06 |
| 6342 | -26.51 | 0.70 | 0.73 | 6.65 | 0.73 | 1.05 |
| 6343 | -26.41 | 0.70 | 0.73 | 6.76 | 0.73 | 1.05 |
| 6344 | -26.32 | 0.71 | 0.73 | 6.85 | 0.73 | 1.05 |
| 6345 | -26.24 | 0.71 | 0.73 | 6.94 | 0.73 | 1.05 |
| 6346 | -26.17 | 0.71 | 0.73 | 7.01 | 0.73 | 1.05 |
| 6347 | -26.10 | 0.71 | 0.73 | 7.06 | 0.73 | 1.05 |
| 6348 | -26.04 | 0.71 | 0.73 | 7.08 | 0.73 | 1.05 |
| 6349 | -26.00 | 0.71 | 0.73 | 7.09 | 0.73 | 1.05 |
| 6350 | -25.97 | 0.71 | 0.72 | 7.06 | 0.73 | 1.06 |
| 6351 | -25.96 | 0.70 | 0.72 | 7.01 | 0.73 | 1.06 |
| 6352 | -25.97 | 0.70 | 0.72 | 6.92 | 0.73 | 1.06 |
| 6353 | -29.25 | 0.61 | 0.63 | 3.45 | 0.63 | 1.06 |
| 6354 | – | – | – | – | – | – |
| 6355 | – | – | – | – | – | – |
| 6356 | -29.08 | 0.61 | 0.64 | 3.69 | 0.64 | 1.06 |
| 6357 | -28.60 | 0.63 | 0.65 | 4.39 | 0.65 | 1.06 |
| 6358 | -27.28 | 0.66 | 0.68 | 6.26 | 0.69 | 1.06 |
| 6359 | -27.17 | 0.67 | 0.69 | 6.39 | 0.69 | 1.06 |
| 6360 | -27.07 | 0.67 | 0.69 | 6.51 | 0.69 | 1.06 |
| 6361 | -26.98 | 0.67 | 0.69 | 6.61 | 0.70 | 1.06 |
| 6362 | -26.90 | 0.67 | 0.69 | 6.70 | 0.70 | 1.06 |
| 6363 | -26.83 | 0.67 | 0.69 | 6.76 | 0.70 | 1.06 |
| 6364 | -26.78 | 0.67 | 0.69 | 6.80 | 0.70 | 1.06 |
| 6365 | -26.73 | 0.67 | 0.68 | 6.82 | 0.70 | 1.06 |
| 6366 | -26.71 | 0.67 | 0.68 | 6.80 | 0.70 | 1.06 |
| 6367 | -26.70 | 0.67 | 0.68 | 6.75 | 0.70 | 1.06 |
| 6368 | -26.71 | 0.66 | 0.67 | 6.66 | 0.69 | 1.06 |
| 6369 | -30.42 | 0.57 | 0.59 | 2.42 | 0.59 | 1.05 |
| 6370 | – | – | – | – | – | – |
| 6371 | – | – | – | – | – | – |
| 6372 | -30.23 | 0.58 | 0.59 | 2.70 | 0.60 | 1.05 |
| 6373 | -29.67 | 0.59 | 0.61 | 3.50 | 0.61 | 1.06 |
| 6374 | -28.16 | 0.63 | 0.64 | 5.69 | 0.65 | 1.07 |
| 6375 | -28.05 | 0.63 | 0.64 | 5.85 | 0.66 | 1.07 |

[Table 607]

640

| 6376 | -27.94 | 0.63 | 0.65 | 5.99 | 0.66 | 1.07 |
|------|--------|------|------|------|------|------|
| 6377 | -27.84 | 0.63 | 0.65 | 6.11 | 0.66 | 1.07 |
| 6378 | -27.75 | 0.63 | 0.65 | 6.21 | 0.66 | 1.07 |
| 6379 | -27.68 | 0.63 | 0.65 | 6.29 | 0.66 | 1.07 |
| 6380 | -27.62 | 0.63 | 0.64 | 6.35 | 0.66 | 1.07 |
| 6381 | -27.57 | 0.63 | 0.64 | 6.37 | 0.66 | 1.07 |
| 6382 | -27.54 | 0.63 | 0.64 | 6.37 | 0.66 | 1.07 |
| 6383 | -27.54 | 0.63 | 0.64 | 6.32 | 0.66 | 1.07 |
| 6384 | -27.55 | 0.63 | 0.63 | 6.24 | 0.66 | 1.07 |
| 6385 | -31.77 | 0.53 | 0.54 | 1.27 | 0.55 | 1.04 |
| 6386 | – | – | – | – | – | – |
| 6387 | – | – | – | – | – | – |
| 6388 | -31.54 | 0.54 | 0.55 | 1.57 | 0.55 | 1.04 |
| 6389 | -30.90 | 0.55 | 0.57 | 2.46 | 0.57 | 1.05 |
| 6390 | -29.18 | 0.59 | 0.60 | 4.94 | 0.62 | 1.07 |
| 6391 | -29.05 | 0.59 | 0.60 | 5.12 | 0.62 | 1.07 |
| 6392 | -28.93 | 0.59 | 0.60 | 5.28 | 0.62 | 1.07 |
| 6393 | -28.82 | 0.59 | 0.60 | 5.43 | 0.62 | 1.07 |
| 6394 | -28.72 | 0.59 | 0.60 | 5.55 | 0.63 | 1.07 |
| 6395 | -28.64 | 0.60 | 0.60 | 5.64 | 0.63 | 1.07 |
| 6396 | -28.58 | 0.59 | 0.60 | 5.71 | 0.63 | 1.08 |
| 6397 | -28.53 | 0.59 | 0.60 | 5.75 | 0.63 | 1.08 |
| 6398 | -28.50 | 0.59 | 0.60 | 5.75 | 0.63 | 1.08 |
| 6399 | -28.49 | 0.59 | 0.60 | 5.71 | 0.63 | 1.08 |
| 6400 | -28.51 | 0.59 | 0.59 | 5.64 | 0.62 | 1.08 |
| 6401 | -22.97 | 1.00 | 1.08 | 5.70 | 0.95 | 0.97 |
| 6402 | – | – | – | – | – | – |
| 6403 | -23.07 | 1.01 | 1.09 | 5.46 | 0.96 | 0.97 |
| 6404 | -23.57 | 1.05 | 1.13 | 4.24 | 0.98 | 0.95 |
| 6405 | -24.21 | 1.12 | 1.21 | 2.34 | 1.02 | 0.94 |
| 6406 | -24.21 | 1.12 | 1.21 | 2.23 | 1.03 | 0.94 |
| 6407 | -24.20 | 1.13 | 1.22 | 2.14 | 1.03 | 0.94 |
| 6408 | -24.18 | 1.13 | 1.22 | 2.06 | 1.03 | 0.94 |
| 6409 | -24.14 | 1.13 | 1.22 | 2.00 | 1.04 | 0.94 |
| 6410 | -24.10 | 1.13 | 1.22 | 1.94 | 1.04 | 0.94 |
| 6411 | -24.05 | 1.14 | 1.22 | 1.89 | 1.04 | 0.94 |
| 6412 | -23.99 | 1.14 | 1.22 | 1.84 | 1.04 | 0.94 |
| 6413 | -23.93 | 1.14 | 1.22 | 1.79 | 1.05 | 0.94 |
| 6414 | -23.88 | 1.14 | 1.22 | 1.73 | 1.05 | 0.94 |
| 6415 | -23.81 | 1.13 | 1.21 | 1.67 | 1.05 | 0.94 |
| 6416 | -23.18 | 0.95 | 1.03 | 6.14 | 0.92 | 0.99 |
| 6417 | – | – | – | – | – | – |
| 6418 | – | – | – | – | – | – |
| 6419 | -23.24 | 0.96 | 1.04 | 5.96 | 0.93 | 0.98 |
| 6420 | -23.57 | 1.00 | 1.08 | 5.00 | 0.95 | 0.97 |
| 6421 | -23.93 | 1.07 | 1.15 | 3.49 | 0.99 | 0.95 |
| 6422 | -23.92 | 1.07 | 1.15 | 3.40 | 1.00 | 0.95 |
| 6423 | -23.89 | 1.07 | 1.15 | 3.32 | 1.00 | 0.95 |
| 6424 | -23.87 | 1.08 | 1.15 | 3.26 | 1.00 | 0.95 |
| 6425 | -23.82 | 1.08 | 1.16 | 3.20 | 1.00 | 0.95 |

[Table 608]

| 6426 | -23.78 | 1.08 | 1.16 | 3.15 | 1.01 | 0.95 |
|------|--------|------|------|------|------|------|
| 6427 | -23.73 | 1.08 | 1.16 | 3.10 | 1.01 | 0.95 |
| 6428 | -23.68 | 1.08 | 1.16 | 3.05 | 1.01 | 0.95 |
| 6429 | -23.62 | 1.08 | 1.15 | 3.00 | 1.01 | 0.95 |
| 6430 | -23.57 | 1.08 | 1.15 | 2.94 | 1.01 | 0.95 |
| 6431 | -23.52 | 1.08 | 1.15 | 2.87 | 1.01 | 0.95 |
| 6432 | -23.47 | 0.91 | 0.98 | 6.43 | 0.90 | 1.00 |
| 6433 | − | − | − | − | − | − |
| 6434 | − | − | − | − | − | − |
| 6435 | -23.50 | 0.92 | 0.99 | 6.31 | 0.90 | 1.00 |
| 6436 | -23.68 | 0.96 | 1.03 | 5.61 | 0.92 | 0.98 |
| 6437 | -23.79 | 1.02 | 1.09 | 4.47 | 0.96 | 0.96 |
| 6438 | -23.77 | 1.02 | 1.09 | 4.40 | 0.96 | 0.96 |
| 6439 | -23.74 | 1.02 | 1.09 | 4.34 | 0.97 | 0.96 |
| 6440 | -23.70 | 1.03 | 1.09 | 4.29 | 0.97 | 0.96 |
| 6441 | -23.65 | 1.03 | 1.10 | 4.25 | 0.97 | 0.96 |
| 6442 | -23.60 | 1.03 | 1.10 | 4.20 | 0.97 | 0.96 |
| 6443 | -23.55 | 1.03 | 1.10 | 4.16 | 0.97 | 0.96 |
| 6444 | -23.50 | 1.03 | 1.09 | 4.11 | 0.98 | 0.96 |
| 6445 | -23.45 | 1.03 | 1.09 | 4.06 | 0.98 | 0.96 |
| 6446 | -23.40 | 1.03 | 1.09 | 4.00 | 0.98 | 0.96 |
| 6447 | -23.36 | 1.03 | 1.08 | 3.92 | 0.98 | 0.96 |
| 6448 | -23.84 | 0.87 | 0.93 | 6.58 | 0.87 | 1.02 |
| 6449 | − | − | − | − | − | − |
| 6450 | − | − | − | − | − | − |
| 6451 | -23.84 | 0.88 | 0.94 | 6.51 | 0.87 | 1.01 |
| 6452 | -23.88 | 0.91 | 0.98 | 6.06 | 0.89 | 1.00 |
| 6453 | -23.78 | 0.97 | 1.03 | 5.29 | 0.93 | 0.98 |
| 6454 | -23.75 | 0.97 | 1.03 | 5.25 | 0.93 | 0.98 |
| 6455 | -23.71 | 0.98 | 1.04 | 5.21 | 0.93 | 0.98 |
| 6456 | -23.66 | 0.98 | 1.04 | 5.17 | 0.94 | 0.97 |
| 6457 | -23.61 | 0.98 | 1.04 | 5.13 | 0.94 | 0.97 |
| 6458 | -23.56 | 0.98 | 1.04 | 5.10 | 0.94 | 0.97 |
| 6459 | -23.51 | 0.98 | 1.04 | 5.06 | 0.94 | 0.97 |
| 6460 | -23.46 | 0.98 | 1.04 | 5.02 | 0.94 | 0.98 |
| 6461 | -23.42 | 0.98 | 1.03 | 4.97 | 0.94 | 0.98 |
| 6462 | -23.37 | 0.98 | 1.03 | 4.90 | 0.94 | 0.98 |
| 6463 | -23.34 | 0.98 | 1.03 | 4.83 | 0.94 | 0.98 |
| 6464 | -24.29 | 0.83 | 0.89 | 6.58 | 0.84 | 1.03 |
| 6465 | − | − | − | − | − | − |
| 6466 | − | − | − | − | − | − |
| 6467 | -24.27 | 0.84 | 0.89 | 6.55 | 0.84 | 1.03 |
| 6468 | -24.18 | 0.87 | 0.93 | 6.35 | 0.86 | 1.01 |
| 6469 | -23.90 | 0.92 | 0.98 | 5.95 | 0.90 | 0.99 |
| 6470 | -23.85 | 0.93 | 0.98 | 5.93 | 0.90 | 0.99 |
| 6471 | -23.80 | 0.93 | 0.98 | 5.91 | 0.90 | 0.99 |
| 6472 | -23.75 | 0.93 | 0.98 | 5.89 | 0.90 | 0.99 |
| 6473 | -23.69 | 0.93 | 0.98 | 5.87 | 0.91 | 0.99 |
| 6474 | -23.64 | 0.93 | 0.98 | 5.84 | 0.91 | 0.99 |
| 6475 | -23.59 | 0.94 | 0.98 | 5.81 | 0.91 | 0.99 |

[Table 609]

| 6476 | -23.54 | 0.94 | 0.98 | 5.77 | 0.91 | 0.99 |
|------|--------|------|------|------|------|------|
| 6477 | -23.50 | 0.94 | 0.98 | 5.72 | 0.91 | 0.99 |
| 6478 | -23.46 | 0.93 | 0.98 | 5.66 | 0.91 | 0.99 |
| 6479 | -23.43 | 0.93 | 0.97 | 5.58 | 0.91 | 0.99 |
| 6480 | -24.83 | 0.79 | 0.84 | 6.42 | 0.81 | 1.04 |
| 6481 | — | — | — | — | — | — |
| 6482 | — | — | — | — | — | — |
| 6483 | -24.79 | 0.80 | 0.85 | 6.44 | 0.81 | 1.04 |
| 6484 | -24.58 | 0.83 | 0.88 | 6.49 | 0.83 | 1.02 |
| 6485 | -24.12 | 0.88 | 0.92 | 6.45 | 0.86 | 1.01 |
| 6486 | -24.06 | 0.88 | 0.93 | 6.45 | 0.87 | 1.00 |
| 6487 | -24.01 | 0.88 | 0.93 | 6.45 | 0.87 | 1.00 |
| 6488 | -23.95 | 0.89 | 0.93 | 6.45 | 0.87 | 1.00 |
| 6489 | -23.89 | 0.89 | 0.93 | 6.44 | 0.87 | 1.00 |
| 6490 | -23.83 | 0.89 | 0.93 | 6.43 | 0.87 | 1.00 |
| 6491 | -23.78 | 0.89 | 0.93 | 6.40 | 0.88 | 1.00 |
| 6492 | -23.74 | 0.89 | 0.93 | 6.37 | 0.88 | 1.00 |
| 6493 | -23.70 | 0.89 | 0.93 | 6.33 | 0.88 | 1.00 |
| 6494 | -23.66 | 0.89 | 0.92 | 6.26 | 0.88 | 1.00 |
| 6495 | -23.64 | 0.89 | 0.92 | 6.18 | 0.87 | 1.00 |
| 6496 | -25.47 | 0.75 | 0.80 | 6.09 | 0.77 | 1.05 |
| 6497 | — | — | — | — | — | — |
| 6498 | — | — | — | — | — | — |
| 6499 | -25.40 | 0.76 | 0.80 | 6.17 | 0.78 | 1.05 |
| 6500 | -25.08 | 0.79 | 0.83 | 6.45 | 0.80 | 1.04 |
| 6501 | -24.45 | 0.83 | 0.88 | 6.78 | 0.83 | 1.02 |
| 6502 | -24.38 | 0.84 | 0.88 | 6.81 | 0.84 | 1.02 |
| 6503 | -24.32 | 0.84 | 0.88 | 6.83 | 0.84 | 1.02 |
| 6504 | -24.26 | 0.84 | 0.88 | 6.84 | 0.84 | 1.02 |
| 6505 | -24.19 | 0.84 | 0.88 | 6.85 | 0.84 | 1.02 |
| 6506 | -24.14 | 0.84 | 0.88 | 6.85 | 0.84 | 1.02 |
| 6507 | -24.09 | 0.84 | 0.88 | 6.84 | 0.84 | 1.02 |
| 6508 | -24.04 | 0.84 | 0.88 | 6.81 | 0.84 | 1.02 |
| 6509 | -24.00 | 0.84 | 0.88 | 6.77 | 0.84 | 1.02 |
| 6510 | -23.97 | 0.84 | 0.87 | 6.71 | 0.84 | 1.02 |
| 6511 | -23.95 | 0.84 | 0.87 | 6.63 | 0.84 | 1.02 |
| 6512 | -26.22 | 0.71 | 0.75 | 5.59 | 0.74 | 1.06 |
| 6513 | — | — | — | — | — | — |
| 6514 | — | — | — | — | — | — |
| 6515 | -26.12 | 0.72 | 0.76 | 5.72 | 0.74 | 1.06 |
| 6516 | -25.68 | 0.75 | 0.79 | 6.24 | 0.77 | 1.05 |
| 6517 | -24.89 | 0.79 | 0.83 | 6.94 | 0.80 | 1.03 |
| 6518 | -24.82 | 0.79 | 0.83 | 6.99 | 0.80 | 1.03 |
| 6519 | -24.74 | 0.80 | 0.83 | 7.04 | 0.80 | 1.03 |
| 6520 | -24.67 | 0.80 | 0.83 | 7.07 | 0.81 | 1.03 |
| 6521 | -24.61 | 0.80 | 0.83 | 7.10 | 0.81 | 1.03 |
| 6522 | -24.55 | 0.80 | 0.83 | 7.11 | 0.81 | 1.03 |
| 6523 | -24.49 | 0.80 | 0.83 | 7.11 | 0.81 | 1.03 |
| 6524 | -24.44 | 0.80 | 0.83 | 7.10 | 0.81 | 1.03 |
| 6525 | -24.41 | 0.80 | 0.83 | 7.06 | 0.81 | 1.03 |

[Table 610]

| 6526 | -24.38 | 0.80 | 0.83 | 7.00 | 0.81 | 1.03 |
|---|---|---|---|---|---|---|
| 6527 | -24.37 | 0.80 | 0.82 | 6.92 | 0.81 | 1.03 |
| 6528 | -27.07 | 0.67 | 0.71 | 4.92 | 0.70 | 1.06 |
| 6529 | – | – | – | – | – | – |
| 6530 | – | – | – | – | – | – |
| 6531 | -26.95 | 0.68 | 0.72 | 5.09 | 0.71 | 1.06 |
| 6532 | -26.40 | 0.71 | 0.74 | 5.85 | 0.73 | 1.05 |
| 6533 | -25.44 | 0.75 | 0.78 | 6.93 | 0.77 | 1.04 |
| 6534 | -25.35 | 0.75 | 0.78 | 7.01 | 0.77 | 1.04 |
| 6535 | -25.27 | 0.75 | 0.79 | 7.07 | 0.77 | 1.04 |
| 6536 | -25.20 | 0.76 | 0.79 | 7.13 | 0.77 | 1.04 |
| 6537 | -25.12 | 0.76 | 0.79 | 7.17 | 0.77 | 1.04 |
| 6538 | -25.06 | 0.76 | 0.79 | 7.20 | 0.78 | 1.04 |
| 6539 | -25.00 | 0.76 | 0.79 | 7.22 | 0.78 | 1.04 |
| 6540 | -24.96 | 0.76 | 0.78 | 7.21 | 0.78 | 1.04 |
| 6541 | -24.92 | 0.76 | 0.78 | 7.18 | 0.78 | 1.04 |
| 6542 | -24.90 | 0.76 | 0.78 | 7.13 | 0.77 | 1.04 |
| 6543 | -24.89 | 0.76 | 0.77 | 7.05 | 0.77 | 1.04 |
| 6544 | -28.06 | 0.64 | 0.67 | 4.07 | 0.66 | 1.06 |
| 6545 | – | – | – | – | – | – |
| 6546 | – | – | – | – | – | – |
| 6547 | -27.91 | 0.64 | 0.67 | 4.29 | 0.67 | 1.06 |
| 6548 | -27.23 | 0.67 | 0.70 | 5.28 | 0.70 | 1.06 |
| 6549 | -26.09 | 0.71 | 0.74 | 6.74 | 0.73 | 1.05 |
| 6550 | -26.00 | 0.71 | 0.74 | 6.84 | 0.74 | 1.05 |
| 6551 | -25.91 | 0.71 | 0.74 | 6.93 | 0.74 | 1.05 |
| 6552 | -25.83 | 0.72 | 0.74 | 7.01 | 0.74 | 1.05 |
| 6553 | -25.75 | 0.72 | 0.74 | 7.07 | 0.74 | 1.05 |
| 6554 | -25.68 | 0.72 | 0.74 | 7.12 | 0.74 | 1.05 |
| 6555 | -25.62 | 0.72 | 0.74 | 7.15 | 0.74 | 1.05 |
| 6556 | -25.57 | 0.72 | 0.74 | 7.16 | 0.74 | 1.05 |
| 6557 | -25.54 | 0.72 | 0.74 | 7.14 | 0.74 | 1.05 |
| 6558 | -25.52 | 0.72 | 0.73 | 7.09 | 0.74 | 1.05 |
| 6559 | -25.51 | 0.71 | 0.73 | 7.01 | 0.74 | 1.05 |
| 6560 | -29.19 | 0.60 | 0.62 | 3.06 | 0.62 | 1.06 |
| 6561 | – | – | – | – | – | – |
| 6562 | -29.01 | 0.60 | 0.63 | 3.32 | 0.63 | 1.06 |
| 6563 | -28.19 | 0.63 | 0.66 | 4.52 | 0.66 | 1.06 |
| 6564 | -26.87 | 0.67 | 0.69 | 6.35 | 0.70 | 1.06 |
| 6565 | -26.76 | 0.67 | 0.69 | 6.48 | 0.70 | 1.06 |
| 6566 | -26.66 | 0.67 | 0.70 | 6.60 | 0.70 | 1.06 |
| 6567 | -26.57 | 0.68 | 0.70 | 6.70 | 0.70 | 1.06 |
| 6568 | -26.49 | 0.68 | 0.70 | 6.79 | 0.71 | 1.06 |
| 6569 | -26.41 | 0.68 | 0.70 | 6.86 | 0.71 | 1.06 |
| 6570 | -26.35 | 0.68 | 0.70 | 6.90 | 0.71 | 1.06 |
| 6571 | -26.30 | 0.68 | 0.70 | 6.92 | 0.71 | 1.06 |
| 6572 | -26.26 | 0.68 | 0.69 | 6.91 | 0.71 | 1.06 |
| 6573 | -26.24 | 0.68 | 0.69 | 6.87 | 0.71 | 1.06 |
| 6574 | -26.24 | 0.67 | 0.69 | 6.80 | 0.70 | 1.06 |
| 6575 | -30.27 | 0.57 | 0.58 | 2.18 | 0.59 | 1.05 |

[Table 611]

| 6576 | — | — | — | — | — | — |
|------|-------|------|------|------|------|------|
| 6577 | -30.06 | 0.57 | 0.59 | 2.47 | 0.59 | 1.06 |
| 6578 | -29.30 | 0.59 | 0.61 | 3.57 | 0.62 | 1.06 |
| 6579 | -27.76 | 0.63 | 0.65 | 5.77 | 0.66 | 1.07 |
| 6580 | -27.64 | 0.63 | 0.65 | 5.93 | 0.66 | 1.07 |
| 6581 | -27.54 | 0.64 | 0.65 | 6.08 | 0.67 | 1.07 |
| 6582 | -27.43 | 0.64 | 0.65 | 6.21 | 0.67 | 1.07 |
| 6583 | -27.34 | 0.64 | 0.65 | 6.31 | 0.67 | 1.07 |
| 6584 | -27.26 | 0.64 | 0.65 | 6.40 | 0.67 | 1.07 |
| 6585 | -27.19 | 0.64 | 0.65 | 6.46 | 0.67 | 1.07 |
| 6586 | -27.14 | 0.64 | 0.65 | 6.50 | 0.67 | 1.07 |
| 6587 | -27.10 | 0.64 | 0.65 | 6.50 | 0.67 | 1.07 |
| 6588 | -27.08 | 0.64 | 0.65 | 6.47 | 0.67 | 1.07 |
| 6589 | -27.09 | 0.63 | 0.64 | 6.40 | 0.67 | 1.07 |
| 6590 | -31.72 | 0.53 | 0.54 | 0.92 | 0.54 | 1.04 |
| 6591 | — | — | — | — | — | — |
| 6592 | -31.47 | 0.53 | 0.54 | 1.23 | 0.55 | 1.04 |
| 6593 | -30.58 | 0.55 | 0.57 | 2.46 | 0.57 | 1.05 |
| 6594 | -28.80 | 0.59 | 0.61 | 5.00 | 0.62 | 1.07 |
| 6595 | -28.67 | 0.59 | 0.61 | 5.19 | 0.63 | 1.07 |
| 6596 | -28.54 | 0.60 | 0.61 | 5.36 | 0.63 | 1.07 |
| 6597 | -28.43 | 0.60 | 0.61 | 5.51 | 0.63 | 1.07 |
| 6598 | -28.32 | 0.60 | 0.61 | 5.64 | 0.63 | 1.07 |
| 6599 | -28.24 | 0.60 | 0.61 | 5.75 | 0.63 | 1.07 |
| 6600 | -28.16 | 0.60 | 0.61 | 5.83 | 0.63 | 1.08 |
| 6601 | -28.10 | 0.60 | 0.61 | 5.88 | 0.64 | 1.08 |
| 6602 | -28.06 | 0.60 | 0.61 | 5.90 | 0.63 | 1.08 |
| 6603 | -28.04 | 0.60 | 0.61 | 5.88 | 0.63 | 1.08 |
| 6604 | -28.05 | 0.60 | 0.60 | 5.81 | 0.63 | 1.08 |
| 6605 | -21.70 | 0.90 | 0.96 | 8.14 | 0.89 | 1.01 |
| 6606 | — | — | — | — | — | — |
| 6607 | — | — | — | — | — | — |
| 6608 | -21.73 | 0.91 | 0.97 | 8.00 | 0.90 | 1.01 |
| 6609 | -22.20 | 0.98 | 1.05 | 6.44 | 0.94 | 0.98 |
| 6610 | -23.06 | 1.06 | 1.13 | 4.07 | 0.99 | 0.95 |
| 6611 | -23.12 | 1.06 | 1.14 | 3.87 | 0.99 | 0.95 |
| 6612 | -23.17 | 1.07 | 1.15 | 3.68 | 0.99 | 0.95 |
| 6613 | -23.21 | 1.07 | 1.15 | 3.51 | 1.00 | 0.95 |
| 6614 | -23.24 | 1.08 | 1.16 | 3.35 | 1.00 | 0.95 |
| 6615 | -23.25 | 1.08 | 1.16 | 3.20 | 1.01 | 0.95 |
| 6616 | -23.26 | 1.08 | 1.16 | 3.06 | 1.01 | 0.95 |
| 6617 | -23.26 | 1.09 | 1.16 | 3.09 | 1.01 | 0.95 |
| 6618 | -23.25 | 1.09 | 1.16 | 2.81 | 1.01 | 0.95 |
| 6619 | -23.23 | 1.09 | 1.16 | 2.68 | 1.01 | 0.95 |
| 6620 | -23.21 | 1.09 | 1.16 | 2.56 | 1.02 | 0.95 |
| 6621 | -22.23 | 0.85 | 0.92 | 8.06 | 0.87 | 1.03 |
| 6622 | — | — | — | — | — | — |
| 6623 | — | — | — | — | — | — |
| 6624 | -22.23 | 0.86 | 0.93 | 7.98 | 0.87 | 1.02 |
| 6625 | -22.45 | 0.93 | 1.00 | 6.91 | 0.91 | 0.99 |

[Table 612]

| 6626 | -22.94 | 1.00 | 1.07 | 5.09 | 0.95 | 0.97 |
|------|--------|------|------|------|------|------|
| 6627 | -22.97 | 1.01 | 1.08 | 4.93 | 0.96 | 0.97 |
| 6628 | -23.00 | 1.01 | 1.08 | 4.78 | 0.96 | 0.96 |
| 6629 | -23.01 | 1.02 | 1.09 | 4.63 | 0.96 | 0.96 |
| 6630 | -23.02 | 1.02 | 1.09 | 4.50 | 0.97 | 0.96 |
| 6631 | -23.02 | 1.03 | 1.09 | 4.38 | 0.97 | 0.96 |
| 6632 | -23.02 | 1.03 | 1.09 | 4.26 | 0.97 | 0.96 |
| 6633 | -23.00 | 1.03 | 1.10 | 4.14 | 0.97 | 0.96 |
| 6634 | -22.99 | 1.03 | 1.10 | 4.03 | 0.98 | 0.96 |
| 6635 | -22.97 | 1.03 | 1.09 | 3.91 | 0.98 | 0.96 |
| 6636 | -22.95 | 1.03 | 1.09 | 3.79 | 0.98 | 0.96 |
| 6637 | -22.84 | 0.81 | 0.87 | 7.82 | 0.83 | 1.04 |
| 6638 | — | — | — | — | — | — |
| 6639 | — | — | — | — | — | — |
| 6640 | -22.81 | 0.82 | 0.88 | 7.80 | 0.84 | 1.04 |
| 6641 | -22.80 | 0.88 | 0.95 | 7.20 | 0.88 | 1.01 |
| 6642 | -22.97 | 0.95 | 1.01 | 5.91 | 0.92 | 0.98 |
| 6643 | -22.98 | 0.96 | 1.02 | 5.79 | 0.92 | 0.98 |
| 6644 | -22.98 | 0.96 | 1.02 | 5.68 | 0.93 | 0.98 |
| 6645 | -22.98 | 0.97 | 1.03 | 5.57 | 0.93 | 0.98 |
| 6646 | -22.97 | 0.97 | 1.03 | 5.46 | 0.93 | 0.98 |
| 6647 | -22.96 | 0.97 | 1.03 | 5.36 | 0.94 | 0.98 |
| 6648 | -22.94 | 0.98 | 1.03 | 5.26 | 0.94 | 0.98 |
| 6649 | -22.92 | 0.98 | 1.03 | 5.16 | 0.94 | 0.98 |
| 6650 | -22.90 | 0.98 | 1.03 | 5.06 | 0.94 | 0.98 |
| 6651 | -22.88 | 0.98 | 1.03 | 4.95 | 0.94 | 0.98 |
| 6652 | -22.86 | 0.98 | 1.03 | 4.83 | 0.94 | 0.98 |
| 6653 | -24.33 | 0.73 | 0.78 | 6.81 | 0.77 | 1.06 |
| 6654 | — | — | — | — | — | — |
| 6655 | — | — | — | — | — | — |
| 6656 | -24.25 | 0.74 | 0.79 | 6.91 | 0.77 | 1.06 |
| 6657 | -23.79 | 0.80 | 0.85 | 7.25 | 0.81 | 1.04 |
| 6658 | -23.44 | 0.86 | 0.90 | 7.00 | 0.85 | 1.01 |
| 6659 | -23.41 | 0.86 | 0.91 | 6.95 | 0.86 | 1.01 |
| 6660 | -23.37 | 0.87 | 0.91 | 6.91 | 0.86 | 1.01 |
| 6661 | -23.33 | 0.87 | 0.91 | 6.86 | 0.86 | 1.01 |
| 6662 | -23.30 | 0.87 | 0.92 | 6.81 | 0.86 | 1.01 |
| 6663 | -23.26 | 0.87 | 0.92 | 6.76 | 0.87 | 1.01 |
| 6664 | -23.22 | 0.88 | 0.92 | 6.70 | 0.87 | 1.01 |
| 6665 | -23.19 | 0.88 | 0.92 | 6.64 | 0.87 | 1.01 |
| 6666 | -23.16 | 0.88 | 0.92 | 6.56 | 0.87 | 1.01 |
| 6667 | -23.14 | 0.88 | 0.92 | 6.47 | 0.87 | 1.00 |
| 6668 | -23.12 | 0.88 | 0.91 | 6.37 | 0.87 | 1.00 |
| 6669 | -24.33 | 0.73 | 0.78 | 6.81 | 0.77 | 1.06 |
| 6670 | — | — | — | — | — | — |
| 6671 | — | — | — | — | — | — |
| 6672 | -24.25 | 0.74 | 0.79 | 6.91 | 0.77 | 1.06 |
| 6673 | -23.79 | 0.80 | 0.85 | 7.25 | 0.81 | 1.04 |
| 6674 | -23.44 | 0.86 | 0.90 | 7.00 | 0.85 | 1.01 |
| 6675 | -23.41 | 0.86 | 0.91 | 6.95 | 0.86 | 1.01 |

[Table 613]

EP 4 442 787 A1

| 6676 | -23.37 | 0.87 | 0.91 | 6.91 | 0.86 | 1.01 |
| 6677 | -23.33 | 0.87 | 0.91 | 6.86 | 0.86 | 1.01 |
| 6678 | -23.30 | 0.87 | 0.92 | 6.81 | 0.86 | 1.01 |
| 6679 | -23.26 | 0.87 | 0.92 | 6.76 | 0.87 | 1.01 |
| 6680 | -23.22 | 0.88 | 0.92 | 6.70 | 0.87 | 1.01 |
| 6681 | -23.19 | 0.88 | 0.92 | 6.64 | 0.87 | 1.01 |
| 6682 | -23.16 | 0.88 | 0.92 | 6.56 | 0.87 | 1.01 |
| 6683 | -23.14 | 0.88 | 0.92 | 6.47 | 0.87 | 1.00 |
| 6684 | -23.12 | 0.88 | 0.91 | 6.37 | 0.87 | 1.00 |
| 6685 | -25.24 | 0.69 | 0.74 | 6.03 | 0.73 | 1.07 |
| 6686 | – | – | – | – | – | – |
| 6687 | -25.13 | 0.70 | 0.75 | 6.19 | 0.74 | 1.07 |
| 6688 | -24.44 | 0.76 | 0.80 | 6.99 | 0.78 | 1.05 |
| 6689 | -23.86 | 0.81 | 0.85 | 7.24 | 0.82 | 1.03 |
| 6690 | -23.81 | 0.82 | 0.86 | 7.24 | 0.82 | 1.03 |
| 6691 | -23.75 | 0.82 | 0.86 | 7.23 | 0.83 | 1.02 |
| 6692 | -23.70 | 0.82 | 0.86 | 7.22 | 0.83 | 1.02 |
| 6693 | -23.65 | 0.83 | 0.86 | 7.20 | 0.83 | 1.02 |
| 6694 | -23.61 | 0.83 | 0.87 | 7.17 | 0.83 | 1.02 |
| 6695 | -23.57 | 0.83 | 0.87 | 7.14 | 0.83 | 1.02 |
| 6696 | -23.53 | 0.83 | 0.87 | 7.09 | 0.83 | 1.02 |
| 6697 | -23.49 | 0.83 | 0.87 | 7.03 | 0.83 | 1.02 |
| 6698 | -23.47 | 0.83 | 0.86 | 6.95 | 0.83 | 1.02 |
| 6699 | -23.45 | 0.83 | 0.86 | 6.85 | 0.83 | 1.02 |
| 6700 | -26.28 | 0.65 | 0.69 | 5.06 | 0.69 | 1.07 |
| 6701 | – | – | – | – | – | – |
| 6702 | -26.14 | 0.66 | 0.70 | 5.27 | 0.70 | 1.07 |
| 6703 | -25.22 | 0.71 | 0.75 | 6.53 | 0.74 | 1.06 |
| 6704 | -24.40 | 0.77 | 0.80 | 7.21 | 0.78 | 1.04 |
| 6705 | -24.33 | 0.77 | 0.81 | 7.32 | 0.79 | 1.04 |
| 6706 | -24.26 | 0.77 | 0.81 | 7.35 | 0.79 | 1.04 |
| 6707 | -24.20 | 0.78 | 0.81 | 7.37 | 0.79 | 1.04 |
| 6708 | -24.14 | 0.78 | 0.81 | 7.38 | 0.79 | 1.04 |
| 6709 | -24.08 | 0.78 | 0.81 | 7.38 | 0.80 | 1.04 |
| 6710 | -24.03 | 0.78 | 0.82 | 7.37 | 0.80 | 1.03 |
| 6711 | -23.99 | 0.78 | 0.81 | 7.34 | 0.80 | 1.03 |
| 6712 | -23.95 | 0.78 | 0.81 | 7.30 | 0.80 | 1.03 |
| 6713 | -23.92 | 0.78 | 0.81 | 7.23 | 0.80 | 1.03 |
| 6714 | -23.91 | 0.78 | 0.81 | 7.14 | 0.80 | 1.03 |
| 6715 | -27.29 | 0.62 | 0.65 | 4.16 | 0.66 | 1.07 |
| 6716 | – | – | – | – | – | – |
| 6717 | -27.13 | 0.63 | 0.66 | 4.41 | 0.66 | 1.07 |
| 6718 | -26.12 | 0.67 | 0.71 | 5.86 | 0.71 | 1.07 |
| 6719 | -25.07 | 0.72 | 0.76 | 7.12 | 0.75 | 1.05 |
| 6720 | -24.98 | 0.73 | 0.76 | 7.19 | 0.75 | 1.05 |
| 6721 | -24.90 | 0.73 | 0.76 | 7.26 | 0.75 | 1.05 |
| 6722 | -24.82 | 0.73 | 0.76 | 7.31 | 0.76 | 1.05 |
| 6723 | -24.75 | 0.74 | 0.76 | 7.36 | 0.76 | 1.05 |
| 6724 | -24.68 | 0.74 | 0.77 | 7.38 | 0.76 | 1.05 |
| 6725 | -24.62 | 0.74 | 0.77 | 7.40 | 0.76 | 1.05 |

[Table 614]

647

EP 4 442 787 A1

| 6726 | -24.57 | 0.74 | 0.77 | 7.39 | 0.76 | 1.05 |
|---|---|---|---|---|---|---|
| 6727 | -24.53 | 0.74 | 0.76 | 7.37 | 0.76 | 1.05 |
| 6728 | -24.50 | 0.74 | 0.76 | 7.32 | 0.76 | 1.05 |
| 6729 | -24.49 | 0.74 | 0.76 | 7.24 | 0.76 | 1.05 |
| 6730 | -28.62 | 0.58 | 0.61 | 2.87 | 0.61 | 1.06 |
| 6731 | — | — | — | — | — | — |
| 6732 | — | — | — | — | — | — |
| 6733 | -28.41 | 0.59 | 0.61 | 3.16 | 0.62 | 1.07 |
| 6734 | -27.17 | 0.63 | 0.66 | 4.98 | 0.67 | 1.07 |
| 6735 | -25.86 | 0.68 | 0.71 | 6.73 | 0.71 | 1.06 |
| 6736 | -25.76 | 0.68 | 0.71 | 6.85 | 0.72 | 1.06 |
| 6737 | -25.66 | 0.69 | 0.71 | 6.95 | 0.72 | 1.06 |
| 6738 | -25.57 | 0.69 | 0.72 | 7.04 | 0.72 | 1.06 |
| 6739 | -25.49 | 0.69 | 0.72 | 7.12 | 0.72 | 1.06 |
| 6740 | -25.41 | 0.69 | 0.72 | 7.17 | 0.72 | 1.06 |
| 6741 | -25.34 | 0.70 | 0.72 | 7.21 | 0.73 | 1.06 |
| 6742 | -25.29 | 0.70 | 0.72 | 7.23 | 0.73 | 1.06 |
| 6743 | -25.24 | 0.70 | 0.72 | 7.23 | 0.73 | 1.06 |
| 6744 | -25.21 | 0.70 | 0.72 | 7.19 | 0.73 | 1.06 |
| 6745 | -25.19 | 0.70 | 0.71 | 7.13 | 0.73 | 1.06 |
| 6746 | -30.13 | 0.54 | 0.56 | 1.43 | 0.56 | 1.05 |
| 6747 | — | — | — | — | — | — |
| 6748 | — | — | — | — | — | — |
| 6749 | -29.89 | 0.55 | 0.57 | 1.76 | 0.57 | 1.05 |
| 6750 | -28.38 | 0.59 | 0.61 | 3.88 | 0.62 | 1.07 |
| 6751 | -26.81 | 0.64 | 0.66 | 6.11 | 0.67 | 1.07 |
| 6752 | -26.68 | 0.64 | 0.66 | 6.27 | 0.68 | 1.07 |
| 6753 | -26.57 | 0.65 | 0.67 | 6.42 | 0.68 | 1.07 |
| 6754 | -26.46 | 0.65 | 0.67 | 6.54 | 0.68 | 1.07 |
| 6755 | -26.36 | 0.65 | 0.67 | 6.65 | 0.68 | 1.07 |
| 6756 | -26.27 | 0.65 | 0.67 | 6.74 | 0.69 | 1.07 |
| 6757 | -26.20 | 0.65 | 0.67 | 6.81 | 0.69 | 1.07 |
| 6758 | -26.13 | 0.65 | 0.67 | 6.85 | 0.69 | 1.07 |
| 6759 | -26.08 | 0.65 | 0.67 | 6.87 | 0.69 | 1.07 |
| 6760 | -26.04 | 0.65 | 0.67 | 6.85 | 0.69 | 1.07 |
| 6761 | -26.03 | 0.65 | 0.67 | 6.80 | 0.69 | 1.07 |
| 6762 | -21.08 | 0.79 | 0.85 | 9.43 | 0.83 | 1.06 |
| 6763 | — | — | — | — | — | — |
| 6764 | — | — | — | — | — | — |
| 6765 | -21.03 | 0.80 | 0.86 | 9.46 | 0.84 | 1.06 |
| 6766 | -20.98 | 0.81 | 0.87 | 9.48 | 0.84 | 1.05 |
| 6767 | -20.88 | 0.90 | 0.96 | 8.67 | 0.89 | 1.01 |
| 6768 | -21.46 | 0.98 | 1.05 | 6.46 | 0.94 | 0.97 |
| 6769 | -21.54 | 0.99 | 1.05 | 6.21 | 0.95 | 0.97 |
| 6770 | -21.62 | 1.00 | 1.06 | 5.96 | 0.95 | 0.97 |
| 6771 | -21.70 | 1.00 | 1.07 | 5.71 | 0.95 | 0.96 |
| 6772 | -21.78 | 1.01 | 1.07 | 5.46 | 0.96 | 0.96 |
| 6773 | -21.85 | 1.01 | 1.08 | 5.22 | 0.96 | 0.96 |
| 6774 | -21.92 | 1.02 | 1.08 | 4.99 | 0.97 | 0.96 |
| 6775 | -21.97 | 1.02 | 1.09 | 4.76 | 0.97 | 0.96 |

[Table 615]

648

| 6776 | -22.03 | 1.03 | 1.09 | 4.54 | 0.97 | 0.96 |
|------|--------|------|------|------|------|------|
| 6777 | -22.07 | 1.03 | 1.09 | 4.32 | 0.97 | 0.96 |
| 6778 | -22.11 | 1.03 | 1.09 | 4.11 | 0.98 | 0.96 |
| 6779 | -21.96 | 0.75 | 0.81 | 8.69 | 0.80 | 1.07 |
| 6780 | — | — | — | — | — | — |
| 6781 | -21.88 | 0.76 | 0.82 | 8.79 | 0.80 | 1.07 |
| 6782 | -21.80 | 0.77 | 0.82 | 8.87 | 0.81 | 1.06 |
| 6783 | -21.41 | 0.85 | 0.91 | 8.72 | 0.86 | 1.02 |
| 6784 | -21.63 | 0.93 | 0.99 | 7.20 | 0.91 | 0.99 |
| 6785 | -21.67 | 0.94 | 0.99 | 7.01 | 0.91 | 0.99 |
| 6786 | -21.71 | 0.94 | 1.00 | 6.82 | 0.91 | 0.98 |
| 6787 | -21.76 | 0.95 | 1.00 | 6.62 | 0.92 | 0.98 |
| 6788 | -21.80 | 0.95 | 1.01 | 6.43 | 0.92 | 0.98 |
| 6789 | -21.83 | 0.96 | 1.01 | 6.24 | 0.93 | 0.98 |
| 6790 | -21.87 | 0.96 | 1.02 | 6.05 | 0.93 | 0.98 |
| 6791 | -21.90 | 0.97 | 1.02 | 5.86 | 0.93 | 0.98 |
| 6792 | -21.93 | 0.97 | 1.02 | 5.67 | 0.93 | 0.98 |
| 6793 | -21.96 | 0.97 | 1.02 | 5.48 | 0.94 | 0.98 |
| 6794 | -21.98 | 0.97 | 1.02 | 5.28 | 0.94 | 0.98 |
| 6795 | -22.84 | 0.72 | 0.77 | 7.91 | 0.77 | 1.08 |
| 6796 | — | — | — | — | — | — |
| 6797 | -22.73 | 0.73 | 0.78 | 8.06 | 0.77 | 1.07 |
| 6798 | -22.05 | 0.81 | 0.86 | 8.58 | 0.83 | 1.04 |
| 6799 | -21.94 | 0.88 | 0.93 | 7.72 | 0.87 | 1.01 |
| 6800 | -21.95 | 0.89 | 0.94 | 7.59 | 0.88 | 1.00 |
| 6801 | -21.96 | 0.89 | 0.94 | 7.45 | 0.88 | 1.00 |
| 6802 | -21.97 | 0.90 | 0.95 | 7.31 | 0.88 | 1.00 |
| 6803 | -21.98 | 0.90 | 0.95 | 7.17 | 0.89 | 1.00 |
| 6804 | -21.99 | 0.91 | 0.95 | 7.02 | 0.89 | 1.00 |
| 6805 | -22.00 | 0.91 | 0.96 | 6.88 | 0.89 | 0.99 |
| 6806 | -22.01 | 0.91 | 0.96 | 6.72 | 0.90 | 0.99 |
| 6807 | -22.02 | 0.92 | 0.96 | 6.56 | 0.90 | 0.99 |
| 6808 | -22.03 | 0.92 | 0.96 | 6.40 | 0.90 | 0.99 |
| 6809 | -22.04 | 0.92 | 0.96 | 6.23 | 0.90 | 0.99 |
| 6810 | -23.93 | 0.68 | 0.72 | 6.83 | 0.73 | 1.08 |
| 6811 | — | — | — | — | — | — |
| 6812 | — | — | — | — | — | — |
| 6813 | -23.79 | 0.69 | 0.73 | 7.04 | 0.73 | 1.08 |
| 6814 | -22.80 | 0.76 | 0.81 | 8.23 | 0.79 | 1.05 |
| 6815 | -22.38 | 0.83 | 0.88 | 8.02 | 0.84 | 1.02 |
| 6816 | -22.36 | 0.84 | 0.88 | 7.94 | 0.84 | 1.02 |
| 6817 | -22.34 | 0.84 | 0.89 | 7.86 | 0.84 | 1.02 |
| 6818 | -22.33 | 0.85 | 0.89 | 7.78 | 0.85 | 1.02 |
| 6819 | -22.31 | 0.85 | 0.89 | 7.68 | 0.85 | 1.01 |
| 6820 | -22.30 | 0.85 | 0.90 | 7.58 | 0.85 | 1.01 |
| 6821 | -22.28 | 0.86 | 0.90 | 7.47 | 0.86 | 1.01 |
| 6822 | -22.28 | 0.86 | 0.90 | 7.36 | 0.86 | 1.01 |
| 6823 | -22.27 | 0.86 | 0.90 | 7.23 | 0.86 | 1.01 |
| 6824 | -22.27 | 0.86 | 0.90 | 7.09 | 0.86 | 1.01 |
| 6825 | -22.27 | 0.87 | 0.90 | 6.94 | 0.86 | 1.01 |

[Table 616]

| | | | | | | |
|---|---|---|---|---|---|---|
| 6826 | -25.16 | 0.64 | 0.68 | 5.54 | 0.69 | 1.08 |
| 6827 | — | — | — | — | — | — |
| 6828 | — | — | — | — | — | — |
| 6829 | -24.99 | 0.65 | 0.69 | 5.80 | 0.69 | 1.08 |
| 6830 | -23.66 | 0.72 | 0.76 | 7.65 | 0.76 | 1.07 |
| 6831 | -22.96 | 0.78 | 0.82 | 8.09 | 0.80 | 1.04 |
| 6832 | -22.91 | 0.79 | 0.83 | 8.07 | 0.81 | 1.04 |
| 6833 | -22.87 | 0.79 | 0.83 | 8.04 | 0.81 | 1.04 |
| 6834 | -22.82 | 0.80 | 0.84 | 8.00 | 0.81 | 1.03 |
| 6835 | -22.79 | 0.80 | 0.84 | 7.96 | 0.81 | 1.03 |
| 6836 | -22.75 | 0.80 | 0.84 | 7.90 | 0.82 | 1.03 |
| 6837 | -22.72 | 0.81 | 0.84 | 7.83 | 0.82 | 1.03 |
| 6838 | -22.70 | 0.81 | 0.85 | 7.75 | 0.82 | 1.03 |
| 6839 | -22.68 | 0.81 | 0.85 | 7.66 | 0.82 | 1.03 |
| 6840 | -22.66 | 0.81 | 0.85 | 7.55 | 0.82 | 1.03 |
| 6841 | -22.66 | 0.81 | 0.85 | 7.42 | 0.82 | 1.02 |
| 6842 | -26.57 | 0.60 | 0.63 | 4.04 | 0.64 | 1.08 |
| 6843 | — | — | — | — | — | — |
| 6844 | — | — | — | — | — | — |
| 6845 | -26.35 | 0.60 | 0.64 | 4.36 | 0.65 | 1.08 |
| 6846 | -24.67 | 0.68 | 0.71 | 6.83 | 0.72 | 1.07 |
| 6847 | -23.67 | 0.74 | 0.77 | 7.91 | 0.76 | 1.05 |
| 6848 | -23.60 | 0.74 | 0.78 | 7.95 | 0.77 | 1.05 |
| 6849 | -23.53 | 0.75 | 0.78 | 7.87 | 0.77 | 1.05 |
| 6850 | -23.46 | 0.75 | 0.78 | 7.99 | 0.78 | 1.05 |
| 6851 | -23.41 | 0.75 | 0.79 | 7.99 | 0.78 | 1.05 |
| 6852 | -23.35 | 0.76 | 0.79 | 7.98 | 0.78 | 1.05 |
| 6853 | -23.30 | 0.76 | 0.79 | 7.95 | 0.78 | 1.04 |
| 6854 | -23.27 | 0.76 | 0.79 | 7.91 | 0.78 | 1.04 |
| 6855 | -23.23 | 0.76 | 0.79 | 7.85 | 0.79 | 1.04 |
| 6856 | -23.21 | 0.76 | 0.79 | 7.77 | 0.79 | 1.04 |
| 6857 | -23.19 | 0.77 | 0.79 | 7.67 | 0.79 | 1.04 |
| 6858 | -28.18 | 0.56 | 0.58 | 2.37 | 0.59 | 1.07 |
| 6859 | — | — | — | — | — | — |
| 6860 | — | — | — | — | — | — |
| 6861 | -27.92 | 0.56 | 0.59 | 2.73 | 0.60 | 1.07 |
| 6862 | -25.84 | 0.63 | 0.66 | 5.77 | 0.67 | 1.08 |
| 6863 | -24.52 | 0.69 | 0.72 | 7.48 | 0.73 | 1.07 |
| 6864 | -24.42 | 0.70 | 0.73 | 7.58 | 0.73 | 1.06 |
| 6865 | -24.33 | 0.70 | 0.73 | 7.66 | 0.73 | 1.06 |
| 6866 | -24.24 | 0.70 | 0.73 | 7.73 | 0.74 | 1.06 |
| 6867 | -24.17 | 0.71 | 0.74 | 7.78 | 0.74 | 1.06 |
| 6868 | -24.10 | 0.71 | 0.74 | 7.81 | 0.74 | 1.06 |
| 6869 | -24.03 | 0.71 | 0.74 | 7.83 | 0.74 | 1.06 |
| 6870 | -23.98 | 0.72 | 0.74 | 7.82 | 0.75 | 1.06 |
| 6871 | -23.93 | 0.72 | 0.74 | 7.79 | 0.75 | 1.06 |
| 6872 | -23.90 | 0.72 | 0.74 | 7.74 | 0.75 | 1.06 |
| 6873 | -23.88 | 0.72 | 0.74 | 7.66 | 0.75 | 1.05 |
| 6874 | -21.30 | 0.69 | 0.75 | 8.93 | 0.76 | 1.10 |
| 6875 | — | — | — | — | — | — |

[Table 617]

| 6876 | – | – | – | – | – | – |
|------|------|------|------|-------|------|------|
| 6877 | -21.14 | 0.70 | 0.75 | 9.17 | 0.76 | 1.10 |
| 6878 | -20.71 | 0.73 | 0.78 | 9.78 | 0.78 | 1.09 |
| 6879 | -19.80 | 0.81 | 0.87 | 10.51 | 0.84 | 1.04 |
| 6880 | -19.70 | 0.90 | 0.95 | 9.24 | 0.89 | 1.00 |
| 6881 | -19.74 | 0.91 | 0.96 | 9.02 | 0.89 | 0.99 |
| 6882 | -19.78 | 0.91 | 0.96 | 8.79 | 0.90 | 0.99 |
| 6883 | -19.83 | 0.92 | 0.97 | 8.54 | 0.90 | 0.99 |
| 6884 | -19.89 | 0.93 | 0.98 | 8.29 | 0.91 | 0.98 |
| 6885 | -19.95 | 0.94 | 0.98 | 8.02 | 0.91 | 0.98 |
| 6886 | -20.02 | 0.94 | 0.99 | 7.75 | 0.91 | 0.98 |
| 6887 | -20.09 | 0.95 | 1.00 | 7.46 | 0.92 | 0.98 |
| 6888 | -20.17 | 0.95 | 1.00 | 7.17 | 0.92 | 0.98 |
| 6889 | -20.26 | 0.96 | 1.00 | 6.88 | 0.92 | 0.98 |
| 6890 | -20.34 | 0.96 | 1.01 | 6.57 | 0.93 | 0.97 |
| 6891 | -22.63 | 0.65 | 0.70 | 7.41 | 0.71 | 1.10 |
| 6892 | – | – | – | – | – | – |
| 6893 | – | – | – | – | – | – |
| 6894 | -22.43 | 0.66 | 0.71 | 7.72 | 0.72 | 1.10 |
| 6895 | -21.90 | 0.69 | 0.73 | 8.54 | 0.74 | 1.09 |
| 6896 | -20.68 | 0.77 | 0.82 | 10.01 | 0.81 | 1.06 |
| 6897 | -20.25 | 0.85 | 0.89 | 9.52 | 0.85 | 1.02 |
| 6898 | -20.25 | 0.85 | 0.90 | 9.38 | 0.86 | 1.01 |
| 6899 | -20.25 | 0.86 | 0.91 | 9.22 | 0.86 | 1.01 |
| 6900 | -20.26 | 0.87 | 0.91 | 9.05 | 0.87 | 1.01 |
| 6901 | -20.28 | 0.87 | 0.92 | 8.87 | 0.87 | 1.01 |
| 6902 | -20.31 | 0.88 | 0.92 | 8.67 | 0.87 | 1.00 |
| 6903 | -20.33 | 0.89 | 0.93 | 8.46 | 0.88 | 1.00 |
| 6904 | -20.37 | 0.89 | 0.93 | 8.24 | 0.88 | 1.00 |
| 6905 | -20.41 | 0.89 | 0.94 | 8.01 | 0.88 | 1.00 |
| 6906 | -20.46 | 0.90 | 0.94 | 7.77 | 0.89 | 0.99 |
| 6907 | -20.51 | 0.90 | 0.94 | 7.51 | 0.89 | 0.99 |
| 6908 | -24.14 | 0.61 | 0.65 | 5.67 | 0.67 | 1.10 |
| 6909 | – | – | – | – | – | – |
| 6910 | – | – | – | – | – | – |
| 6911 | -23.91 | 0.62 | 0.66 | 6.04 | 0.67 | 1.10 |
| 6912 | -23.25 | 0.64 | 0.68 | 7.05 | 0.70 | 1.10 |
| 6913 | -21.67 | 0.72 | 0.77 | 9.26 | 0.77 | 1.07 |
| 6914 | -20.92 | 0.80 | 0.84 | 9.55 | 0.82 | 1.04 |
| 6915 | -20.89 | 0.80 | 0.84 | 9.49 | 0.82 | 1.03 |
| 6916 | -20.86 | 0.81 | 0.85 | 9.40 | 0.83 | 1.03 |
| 6917 | -20.84 | 0.82 | 0.86 | 9.30 | 0.83 | 1.03 |
| 6918 | -20.82 | 0.82 | 0.86 | 9.18 | 0.83 | 1.03 |
| 6919 | -20.81 | 0.83 | 0.87 | 9.05 | 0.84 | 1.02 |
| 6920 | -20.81 | 0.83 | 0.87 | 8.91 | 0.84 | 1.02 |
| 6921 | -20.81 | 0.84 | 0.87 | 8.75 | 0.84 | 1.02 |
| 6922 | -20.82 | 0.84 | 0.88 | 8.58 | 0.84 | 1.02 |
| 6923 | -20.84 | 0.84 | 0.88 | 8.38 | 0.85 | 1.01 |
| 6924 | -20.87 | 0.85 | 0.88 | 8.18 | 0.85 | 1.01 |
| 6925 | -25.87 | 0.57 | 0.59 | 3.72 | 0.61 | 1.09 |

[Table 618]

| 6926 | — | — | — | — | — | — |
|------|---|---|---|---|---|---|
| 6927 | — | — | — | — | — | — |
| 6928 | -25.58 | 0.58 | 0.60 | 4.14 | 0.62 | 1.09 |
| 6929 | -24.79 | 0.60 | 0.63 | 5.31 | 0.65 | 1.09 |
| 6930 | -22.82 | 0.68 | 0.72 | 8.24 | 0.73 | 1.08 |
| 6931 | -21.73 | 0.75 | 0.78 | 9.31 | 0.78 | 1.06 |
| 6932 | -21.66 | 0.75 | 0.79 | 9.32 | 0.78 | 1.05 |
| 6933 | -21.61 | 0.76 | 0.80 | 9.31 | 0.79 | 1.05 |
| 6934 | -21.55 | 0.76 | 0.80 | 9.28 | 0.79 | 1.05 |
| 6935 | -21.51 | 0.77 | 0.81 | 9.23 | 0.80 | 1.04 |
| 6936 | -21.47 | 0.77 | 0.81 | 9.17 | 0.80 | 1.04 |
| 6937 | -21.44 | 0.78 | 0.81 | 9.08 | 0.80 | 1.04 |
| 6938 | -21.41 | 0.78 | 0.82 | 8.98 | 0.80 | 1.04 |
| 6939 | -21.40 | 0.79 | 0.82 | 8.86 | 0.81 | 1.04 |
| 6940 | -21.39 | 0.79 | 0.82 | 8.72 | 0.81 | 1.03 |
| 6941 | -21.40 | 0.79 | 0.82 | 8.56 | 0.81 | 1.03 |
| 6942 | -27.84 | 0.52 | 0.54 | 1.64 | 0.55 | 1.06 |
| 6943 | — | — | — | — | — | — |
| 6944 | — | — | — | — | — | — |
| 6945 | -27.50 | 0.53 | 0.55 | 2.08 | 0.56 | 1.07 |
| 6946 | -26.56 | 0.56 | 0.58 | 3.37 | 0.60 | 1.08 |
| 6947 | -24.14 | 0.63 | 0.67 | 6.94 | 0.68 | 1.09 |
| 6948 | -22.69 | 0.70 | 0.73 | 8.79 | 0.74 | 1.07 |
| 6949 | -22.59 | 0.71 | 0.74 | 8.87 | 0.74 | 1.07 |
| 6950 | -22.50 | 0.71 | 0.74 | 8.93 | 0.75 | 1.07 |
| 6951 | -22.42 | 0.72 | 0.75 | 8.97 | 0.75 | 1.06 |
| 6952 | -22.34 | 0.72 | 0.75 | 8.99 | 0.76 | 1.06 |
| 6953 | -22.28 | 0.72 | 0.76 | 8.99 | 0.76 | 1.06 |
| 6954 | -22.22 | 0.73 | 0.76 | 8.97 | 0.76 | 1.06 |
| 6955 | -22.18 | 0.73 | 0.76 | 8.93 | 0.76 | 1.05 |
| 6956 | -22.14 | 0.74 | 0.76 | 8.86 | 0.77 | 1.05 |
| 6957 | -22.11 | 0.74 | 0.76 | 8.77 | 0.77 | 1.05 |
| 6958 | -22.10 | 0.74 | 0.76 | 8.65 | 0.77 | 1.05 |
| 6959 | -23.23 | 0.58 | 0.61 | 5.43 | 0.64 | 1.11 |
| 6960 | — | — | — | — | — | — |
| 6961 | — | — | — | — | — | — |
| 6962 | -22.91 | 0.59 | 0.62 | 5.92 | 0.65 | 1.11 |
| 6963 | -21.20 | 0.64 | 0.68 | 8.56 | 0.71 | 1.11 |
| 6964 | -19.21 | 0.72 | 0.77 | 11.41 | 0.78 | 1.08 |
| 6965 | -18.15 | 0.81 | 0.85 | 11.87 | 0.83 | 1.04 |
| 6966 | -18.09 | 0.81 | 0.86 | 11.77 | 0.84 | 1.03 |
| 6967 | -18.05 | 0.82 | 0.86 | 11.66 | 0.84 | 1.03 |
| 6968 | -18.01 | 0.83 | 0.87 | 11.52 | 0.84 | 1.02 |
| 6969 | -17.98 | 0.84 | 0.88 | 11.36 | 0.85 | 1.02 |
| 6970 | -17.96 | 0.84 | 0.88 | 11.17 | 0.85 | 1.01 |
| 6971 | -17.96 | 0.85 | 0.89 | 10.96 | 0.86 | 1.01 |
| 6972 | -17.96 | 0.86 | 0.89 | 10.72 | 0.86 | 1.01 |
| 6973 | -17.98 | 0.86 | 0.90 | 10.47 | 0.86 | 1.00 |
| 6974 | -18.02 | 0.87 | 0.90 | 10.19 | 0.87 | 1.00 |
| 6975 | -18.06 | 0.87 | 0.91 | 9.89 | 0.87 | 1.00 |

[Table 619]

| 6976 | -25.34 | 0.53 | 0.55 | 2.99 | 0.58 | 1.08 |
|---|---|---|---|---|---|---|
| 6977 | — | — | — | — | — | — |
| 6978 | — | — | — | — | — | — |
| 6979 | -24.97 | 0.54 | 0.56 | 3.51 | 0.59 | 1.09 |
| 6980 | -22.95 | 0.59 | 0.63 | 6.47 | 0.65 | 1.11 |
| 6981 | -20.52 | 0.68 | 0.72 | 10.13 | 0.74 | 1.10 |
| 6982 | -19.12 | 0.76 | 0.79 | 11.49 | 0.79 | 1.06 |
| 6983 | -19.04 | 0.76 | 0.80 | 11.48 | 0.80 | 1.05 |
| 6984 | -18.96 | 0.77 | 0.81 | 11.46 | 0.80 | 1.05 |
| 6985 | -18.89 | 0.78 | 0.81 | 11.40 | 0.81 | 1.04 |
| 6986 | -18.83 | 0.78 | 0.82 | 11.33 | 0.81 | 1.04 |
| 6987 | -18.78 | 0.79 | 0.82 | 11.22 | 0.81 | 1.04 |
| 6988 | -18.75 | 0.80 | 0.83 | 11.10 | 0.82 | 1.03 |
| 6989 | -18.72 | 0.80 | 0.83 | 10.94 | 0.82 | 1.03 |
| 6990 | -18.71 | 0.81 | 0.84 | 10.76 | 0.82 | 1.03 |
| 6991 | -18.71 | 0.81 | 0.84 | 10.56 | 0.83 | 1.02 |
| 6992 | -18.72 | 0.82 | 0.84 | 10.32 | 0.83 | 1.02 |
| 6993 | -23.84 | 1.10 | 1.19 | 3.43 | 1.01 | 0.95 |
| 6994 | — | — | — | — | — | — |
| 6995 | — | — | — | — | — | — |
| 6996 | -23.94 | 1.10 | 1.20 | 3.19 | 1.02 | 0.94 |
| 6997 | -24.21 | 1.13 | 1.23 | 2.55 | 1.03 | 0.94 |
| 6998 | -24.29 | 1.18 | 1.28 | 1.45 | 1.07 | 0.92 |
| 6999 | -24.23 | 1.19 | 1.28 | 1.43 | 1.07 | 0.92 |
| 7000 | -24.16 | 1.19 | 1.28 | 1.41 | 1.07 | 0.92 |
| 7001 | -24.08 | 1.19 | 1.28 | 1.41 | 1.08 | 0.92 |
| 7002 | -24.00 | 1.19 | 1.28 | 1.41 | 1.08 | 0.93 |
| 7003 | -23.91 | 1.19 | 1.28 | 1.42 | 1.08 | 0.93 |
| 7004 | -23.82 | 1.19 | 1.28 | 1.42 | 1.08 | 0.93 |
| 7005 | -23.72 | 1.19 | 1.28 | 1.42 | 1.08 | 0.93 |
| 7006 | -23.63 | 1.19 | 1.27 | 1.41 | 1.09 | 0.93 |
| 7007 | -23.54 | 1.19 | 1.27 | 1.40 | 1.09 | 0.93 |
| 7008 | -23.46 | 1.18 | 1.26 | 1.37 | 1.09 | 0.93 |
| 7009 | -23.56 | 1.05 | 1.13 | 4.39 | 0.99 | 0.96 |
| 7010 | — | — | — | — | — | — |
| 7011 | — | — | — | — | — | — |
| 7012 | -23.63 | 1.06 | 1.14 | 4.20 | 0.99 | 0.96 |
| 7013 | -23.78 | 1.08 | 1.17 | 3.70 | 1.00 | 0.95 |
| 7014 | -23.62 | 1.13 | 1.21 | 2.90 | 1.04 | 0.93 |
| 7015 | -23.55 | 1.13 | 1.22 | 2.89 | 1.04 | 0.93 |
| 7016 | -23.48 | 1.14 | 1.22 | 2.88 | 1.04 | 0.93 |
| 7017 | -23.40 | 1.14 | 1.22 | 2.88 | 1.04 | 0.93 |
| 7018 | -23.31 | 1.14 | 1.22 | 2.89 | 1.05 | 0.94 |
| 7019 | -23.22 | 1.14 | 1.22 | 2.89 | 1.05 | 0.94 |
| 7020 | -23.13 | 1.14 | 1.21 | 2.90 | 1.05 | 0.94 |
| 7021 | -23.05 | 1.14 | 1.21 | 2.90 | 1.05 | 0.94 |
| 7022 | -22.96 | 1.14 | 1.21 | 2.89 | 1.05 | 0.94 |
| 7023 | -22.88 | 1.13 | 1.20 | 2.86 | 1.05 | 0.94 |
| 7024 | -22.80 | 1.13 | 1.20 | 2.83 | 1.05 | 0.94 |
| 7025 | -23.33 | 1.00 | 1.08 | 5.29 | 0.96 | 0.97 |

[Table 620]

| 7026 | – | – | – | – | – | – |
|---|---|---|---|---|---|---|
| 7027 | – | – | – | – | – | – |
| 7028 | -23.35 | 1.01 | 1.09 | 5.16 | 0.96 | 0.97 |
| 7029 | -23.39 | 1.03 | 1.11 | 4.82 | 0.97 | 0.96 |
| 7030 | -22.99 | 1.08 | 1.15 | 4.34 | 1.00 | 0.95 |
| 7031 | -22.91 | 1.08 | 1.15 | 4.35 | 1.01 | 0.95 |
| 7032 | -22.83 | 1.09 | 1.15 | 4.36 | 1.01 | 0.95 |
| 7033 | -22.74 | 1.09 | 1.15 | 4.37 | 1.01 | 0.95 |
| 7034 | -22.65 | 1.09 | 1.15 | 4.38 | 1.01 | 0.95 |
| 7035 | -22.56 | 1.09 | 1.15 | 4.39 | 1.01 | 0.95 |
| 7036 | -22.47 | 1.09 | 1.15 | 4.40 | 1.01 | 0.95 |
| 7037 | -22.39 | 1.09 | 1.14 | 4.40 | 1.02 | 0.95 |
| 7038 | -22.31 | 1.09 | 1.14 | 4.38 | 1.02 | 0.95 |
| 7039 | -22.23 | 1.08 | 1.14 | 4.36 | 1.02 | 0.95 |
| 7040 | -22.17 | 1.08 | 1.13 | 4.31 | 1.01 | 0.95 |
| 7041 | -23.15 | 0.96 | 1.03 | 6.13 | 0.93 | 0.99 |
| 7042 | – | – | – | – | – | – |
| 7043 | – | – | – | – | – | – |
| 7044 | -23.13 | 0.97 | 1.03 | 6.05 | 0.93 | 0.98 |
| 7045 | -23.06 | 0.99 | 1.05 | 5.87 | 0.94 | 0.98 |
| 7046 | -22.42 | 1.03 | 1.09 | 5.76 | 0.97 | 0.96 |
| 7047 | -22.32 | 1.03 | 1.09 | 5.79 | 0.97 | 0.96 |
| 7048 | -22.23 | 1.04 | 1.09 | 5.81 | 0.98 | 0.96 |
| 7049 | -22.14 | 1.04 | 1.09 | 5.84 | 0.98 | 0.96 |
| 7050 | -22.04 | 1.04 | 1.09 | 5.86 | 0.98 | 0.96 |
| 7051 | -21.95 | 1.04 | 1.08 | 5.88 | 0.98 | 0.96 |
| 7052 | -21.86 | 1.04 | 1.08 | 5.89 | 0.98 | 0.96 |
| 7053 | -21.78 | 1.04 | 1.08 | 5.89 | 0.98 | 0.96 |
| 7054 | -21.70 | 1.03 | 1.08 | 5.88 | 0.98 | 0.96 |
| 7055 | -21.63 | 1.03 | 1.07 | 5.85 | 0.98 | 0.96 |
| 7056 | -21.56 | 1.03 | 1.06 | 5.79 | 0.98 | 0.96 |
| 7057 | -23.02 | 0.92 | 0.97 | 6.88 | 0.90 | 1.00 |
| 7058 | – | – | – | – | – | – |
| 7059 | – | – | – | – | – | – |
| 7060 | -22.97 | 0.92 | 0.98 | 6.86 | 0.90 | 1.00 |
| 7061 | -22.80 | 0.94 | 1.00 | 6.84 | 0.91 | 0.99 |
| 7062 | -21.92 | 0.98 | 1.03 | 7.12 | 0.94 | 0.97 |
| 7063 | -21.81 | 0.98 | 1.03 | 7.17 | 0.94 | 0.97 |
| 7064 | -21.71 | 0.99 | 1.03 | 7.21 | 0.94 | 0.97 |
| 7065 | -21.61 | 0.99 | 1.03 | 7.26 | 0.94 | 0.97 |
| 7066 | -21.51 | 0.99 | 1.02 | 7.29 | 0.95 | 0.97 |
| 7067 | -21.41 | 0.99 | 1.02 | 7.32 | 0.95 | 0.97 |
| 7068 | -21.32 | 0.99 | 1.02 | 7.34 | 0.95 | 0.97 |
| 7069 | -21.24 | 0.98 | 1.02 | 7.34 | 0.95 | 0.97 |
| 7070 | -21.16 | 0.98 | 1.01 | 7.33 | 0.95 | 0.98 |
| 7071 | -21.09 | 0.98 | 1.01 | 7.30 | 0.95 | 0.98 |
| 7072 | -21.03 | 0.98 | 1.00 | 7.24 | 0.94 | 0.98 |
| 7073 | -22.96 | 0.87 | 0.92 | 7.53 | 0.87 | 1.01 |
| 7074 | – | – | – | – | – | – |
| 7075 | – | – | – | – | – | – |

[Table 621]

654

| 7076 | -22.88 | 0.88 | 0.93 | 7.57 | 0.87 | 1.01 |
|------|--------|------|------|------|------|------|
| 7077 | -22.61 | 0.90 | 0.94 | 7.71 | 0.88 | 1.00 |
| 7078 | -21.51 | 0.93 | 0.97 | 8.39 | 0.91 | 0.99 |
| 7079 | -21.40 | 0.94 | 0.97 | 8.46 | 0.91 | 0.99 |
| 7080 | -21.28 | 0.94 | 0.97 | 8.53 | 0.91 | 0.99 |
| 7081 | -21.17 | 0.94 | 0.97 | 8.59 | 0.91 | 0.99 |
| 7082 | -21.07 | 0.94 | 0.97 | 8.64 | 0.91 | 0.99 |
| 7083 | -20.97 | 0.94 | 0.96 | 8.68 | 0.91 | 0.99 |
| 7084 | -20.87 | 0.94 | 0.96 | 8.71 | 0.91 | 0.99 |
| 7085 | -20.79 | 0.93 | 0.96 | 8.72 | 0.91 | 0.99 |
| 7086 | -20.71 | 0.93 | 0.95 | 8.71 | 0.91 | 0.99 |
| 7087 | -20.65 | 0.93 | 0.95 | 8.67 | 0.91 | 0.99 |
| 7088 | -20.59 | 0.93 | 0.94 | 8.61 | 0.91 | 0.99 |
| 7089 | -22.97 | 0.83 | 0.87 | 8.05 | 0.84 | 1.03 |
| 7090 | — | — | — | — | — | — |
| 7091 | — | — | — | — | — | — |
| 7092 | -22.86 | 0.84 | 0.88 | 8.15 | 0.84 | 1.02 |
| 7093 | -22.51 | 0.85 | 0.89 | 8.45 | 0.85 | 1.02 |
| 7094 | -21.22 | 0.89 | 0.91 | 9.53 | 0.88 | 1.00 |
| 7095 | -21.09 | 0.89 | 0.91 | 9.63 | 0.88 | 1.00 |
| 7096 | -20.97 | 0.89 | 0.91 | 9.72 | 0.88 | 1.00 |
| 7097 | -20.85 | 0.89 | 0.91 | 9.80 | 0.88 | 1.00 |
| 7098 | -20.74 | 0.89 | 0.91 | 9.87 | 0.88 | 1.00 |
| 7099 | -20.64 | 0.89 | 0.91 | 9.92 | 0.88 | 1.00 |
| 7100 | -20.54 | 0.89 | 0.91 | 9.95 | 0.88 | 1.00 |
| 7101 | -20.45 | 0.89 | 0.90 | 9.97 | 0.88 | 1.00 |
| 7102 | -20.38 | 0.88 | 0.90 | 9.96 | 0.88 | 1.01 |
| 7103 | -20.31 | 0.88 | 0.89 | 9.93 | 0.88 | 1.01 |
| 7104 | -20.27 | 0.88 | 0.89 | 9.87 | 0.88 | 1.01 |
| 7105 | -23.06 | 0.79 | 0.83 | 8.44 | 0.81 | 1.04 |
| 7106 | — | — | — | — | — | — |
| 7107 | — | — | — | — | — | — |
| 7108 | -22.92 | 0.79 | 0.83 | 8.59 | 0.81 | 1.04 |
| 7109 | -22.50 | 0.81 | 0.84 | 9.05 | 0.82 | 1.03 |
| 7110 | -21.04 | 0.84 | 0.86 | 10.53 | 0.84 | 1.02 |
| 7111 | -20.91 | 0.84 | 0.86 | 10.65 | 0.85 | 1.02 |
| 7112 | -20.78 | 0.84 | 0.86 | 10.76 | 0.85 | 1.02 |
| 7113 | -20.65 | 0.84 | 0.86 | 10.86 | 0.85 | 1.02 |
| 7114 | -20.54 | 0.84 | 0.86 | 10.95 | 0.85 | 1.02 |
| 7115 | -20.43 | 0.84 | 0.85 | 11.01 | 0.85 | 1.02 |
| 7116 | -20.33 | 0.84 | 0.85 | 11.06 | 0.85 | 1.02 |
| 7117 | -20.24 | 0.84 | 0.85 | 11.08 | 0.85 | 1.02 |
| 7118 | -20.17 | 0.84 | 0.84 | 11.08 | 0.85 | 1.02 |
| 7119 | -20.11 | 0.83 | 0.84 | 11.05 | 0.84 | 1.02 |
| 7120 | -20.07 | 0.83 | 0.83 | 10.98 | 0.84 | 1.02 |
| 7121 | -23.26 | 0.75 | 0.78 | 8.66 | 0.78 | 1.05 |
| 7122 | — | — | — | — | — | — |
| 7123 | — | — | — | — | — | — |
| 7124 | -23.09 | 0.75 | 0.78 | 8.87 | 0.78 | 1.05 |
| 7125 | -22.60 | 0.77 | 0.79 | 9.48 | 0.79 | 1.04 |

[Table 622]

| | | | | | | |
|------|--------|------|------|-------|------|------|
| 7126 | -20.99 | 0.79 | 0.81 | 11.35 | 0.81 | 1.04 |
| 7127 | -20.85 | 0.79 | 0.81 | 11.50 | 0.81 | 1.04 |
| 7128 | -20.71 | 0.80 | 0.81 | 11.63 | 0.82 | 1.04 |
| 7129 | -20.58 | 0.80 | 0.81 | 11.75 | 0.82 | 1.04 |
| 7130 | -20.46 | 0.80 | 0.81 | 11.85 | 0.82 | 1.04 |
| 7131 | -20.35 | 0.79 | 0.80 | 11.94 | 0.82 | 1.04 |
| 7132 | -20.25 | 0.79 | 0.80 | 11.99 | 0.82 | 1.04 |
| 7133 | -20.17 | 0.79 | 0.80 | 12.02 | 0.82 | 1.04 |
| 7134 | -20.10 | 0.79 | 0.79 | 12.02 | 0.81 | 1.04 |
| 7135 | -20.04 | 0.79 | 0.79 | 11.99 | 0.81 | 1.04 |
| 7136 | -20.00 | 0.78 | 0.78 | 11.92 | 0.81 | 1.04 |
| 7137 | -23.57 | 0.71 | 0.73 | 8.70 | 0.74 | 1.06 |
| 7138 | – | – | – | – | – | – |
| 7139 | – | – | – | – | – | – |
| 7140 | -23.38 | 0.71 | 0.74 | 8.96 | 0.75 | 1.06 |
| 7141 | -22.81 | 0.72 | 0.75 | 9.72 | 0.76 | 1.06 |
| 7142 | -21.07 | 0.75 | 0.76 | 11.97 | 0.78 | 1.05 |
| 7143 | -20.92 | 0.75 | 0.76 | 12.15 | 0.78 | 1.05 |
| 7144 | -20.78 | 0.75 | 0.76 | 12.30 | 0.78 | 1.05 |
| 7145 | -20.65 | 0.75 | 0.76 | 12.44 | 0.78 | 1.06 |
| 7146 | -20.53 | 0.75 | 0.76 | 12.56 | 0.79 | 1.06 |
| 7147 | -20.41 | 0.75 | 0.75 | 12.65 | 0.79 | 1.06 |
| 7148 | -20.31 | 0.75 | 0.75 | 12.72 | 0.79 | 1.06 |
| 7149 | -20.23 | 0.75 | 0.75 | 12.76 | 0.78 | 1.06 |
| 7150 | -20.16 | 0.74 | 0.74 | 12.76 | 0.78 | 1.06 |
| 7151 | -20.11 | 0.74 | 0.74 | 12.73 | 0.78 | 1.06 |
| 7152 | -20.08 | 0.74 | 0.73 | 12.65 | 0.78 | 1.06 |
| 7153 | -24.00 | 0.67 | 0.69 | 8.53 | 0.71 | 1.07 |
| 7154 | – | – | – | – | – | – |
| 7155 | – | – | – | – | – | – |
| 7156 | -23.79 | 0.67 | 0.69 | 8.84 | 0.71 | 1.07 |
| 7157 | -23.16 | 0.68 | 0.70 | 9.75 | 0.72 | 1.07 |
| 7158 | -21.29 | 0.71 | 0.71 | 12.37 | 0.75 | 1.07 |
| 7159 | -21.13 | 0.71 | 0.71 | 12.57 | 0.75 | 1.07 |
| 7160 | -20.99 | 0.71 | 0.71 | 12.75 | 0.75 | 1.07 |
| 7161 | -20.85 | 0.71 | 0.71 | 12.90 | 0.75 | 1.07 |
| 7162 | -20.73 | 0.71 | 0.71 | 13.04 | 0.75 | 1.08 |
| 7163 | -20.61 | 0.71 | 0.71 | 13.14 | 0.75 | 1.08 |
| 7164 | -20.51 | 0.70 | 0.71 | 13.22 | 0.75 | 1.08 |
| 7165 | -20.43 | 0.70 | 0.70 | 13.26 | 0.75 | 1.08 |
| 7166 | -20.36 | 0.70 | 0.70 | 13.26 | 0.75 | 1.08 |
| 7167 | -20.32 | 0.70 | 0.69 | 13.23 | 0.75 | 1.08 |
| 7168 | -20.29 | 0.69 | 0.69 | 13.14 | 0.74 | 1.08 |
| 7169 | -24.58 | 0.63 | 0.64 | 8.14 | 0.67 | 1.08 |
| 7170 | – | – | – | – | – | – |
| 7171 | – | – | – | – | – | – |
| 7172 | -24.35 | 0.63 | 0.64 | 8.50 | 0.67 | 1.08 |
| 7173 | -23.66 | 0.64 | 0.65 | 9.54 | 0.69 | 1.08 |
| 7174 | -21.65 | 0.66 | 0.67 | 12.51 | 0.72 | 1.09 |
| 7175 | -21.49 | 0.67 | 0.67 | 12.73 | 0.72 | 1.09 |

[Table 623]

| 7176 | -21.34 | 0.67 | 0.67 | 12.93 | 0.72 | 1.09 |
|------|--------|------|------|-------|------|------|
| 7177 | -21.20 | 0.67 | 0.67 | 13.11 | 0.72 | 1.09 |
| 7178 | -21.07 | 0.66 | 0.67 | 13.25 | 0.72 | 1.09 |
| 7179 | -20.96 | 0.66 | 0.66 | 13.37 | 0.72 | 1.10 |
| 7180 | -20.86 | 0.66 | 0.66 | 13.45 | 0.72 | 1.10 |
| 7181 | -20.78 | 0.66 | 0.66 | 13.49 | 0.72 | 1.10 |
| 7182 | -20.72 | 0.66 | 0.65 | 13.50 | 0.72 | 1.10 |
| 7183 | -20.68 | 0.65 | 0.65 | 13.45 | 0.72 | 1.10 |
| 7184 | -20.66 | 0.65 | 0.64 | 13.36 | 0.71 | 1.10 |
| 7185 | -25.34 | 0.59 | 0.59 | 7.51 | 0.63 | 1.08 |
| 7186 | – | – | – | – | – | – |
| 7187 | – | – | – | – | – | – |
| 7188 | -25.08 | 0.59 | 0.60 | 7.91 | 0.63 | 1.08 |
| 7189 | -24.32 | 0.60 | 0.61 | 9.08 | 0.65 | 1.09 |
| 7190 | -22.18 | 0.62 | 0.62 | 12.37 | 0.68 | 1.10 |
| 7191 | -22.01 | 0.62 | 0.62 | 12.61 | 0.68 | 1.11 |
| 7192 | -21.85 | 0.62 | 0.62 | 12.83 | 0.69 | 1.11 |
| 7193 | -21.71 | 0.62 | 0.62 | 13.02 | 0.69 | 1.11 |
| 7194 | -21.57 | 0.62 | 0.62 | 13.17 | 0.69 | 1.11 |
| 7195 | -21.46 | 0.62 | 0.62 | 13.30 | 0.69 | 1.12 |
| 7196 | -21.36 | 0.62 | 0.62 | 13.38 | 0.69 | 1.12 |
| 7197 | -21.28 | 0.62 | 0.61 | 13.43 | 0.69 | 1.12 |
| 7198 | -21.23 | 0.62 | 0.61 | 13.43 | 0.69 | 1.12 |
| 7199 | -21.19 | 0.61 | 0.61 | 13.38 | 0.68 | 1.12 |
| 7200 | -21.19 | 0.61 | 0.60 | 13.27 | 0.68 | 1.12 |
| 7201 | -26.30 | 0.55 | 0.55 | 6.65 | 0.59 | 1.08 |
| 7202 | – | – | – | – | – | – |
| 7203 | – | – | – | – | – | – |
| 7204 | -26.02 | 0.55 | 0.55 | 7.08 | 0.59 | 1.08 |
| 7205 | -25.19 | 0.56 | 0.56 | 8.34 | 0.61 | 1.09 |
| 7206 | -22.88 | 0.58 | 0.58 | 11.91 | 0.65 | 1.12 |
| 7207 | -22.70 | 0.58 | 0.58 | 12.17 | 0.65 | 1.12 |
| 7208 | -22.54 | 0.58 | 0.58 | 12.40 | 0.65 | 1.12 |
| 7209 | -22.39 | 0.58 | 0.58 | 12.60 | 0.65 | 1.13 |
| 7210 | -22.25 | 0.58 | 0.58 | 12.76 | 0.65 | 1.13 |
| 7211 | -22.13 | 0.58 | 0.58 | 12.89 | 0.65 | 1.13 |
| 7212 | -22.03 | 0.58 | 0.57 | 12.98 | 0.65 | 1.14 |
| 7213 | -21.96 | 0.58 | 0.57 | 13.02 | 0.65 | 1.14 |
| 7214 | -21.91 | 0.58 | 0.57 | 13.01 | 0.65 | 1.14 |
| 7215 | -21.89 | 0.57 | 0.56 | 12.94 | 0.65 | 1.14 |
| 7216 | -21.89 | 0.57 | 0.56 | 12.82 | 0.64 | 1.14 |
| 7217 | -23.23 | 1.11 | 1.21 | 3.54 | 1.03 | 0.94 |
| 7218 | – | – | – | – | – | – |
| 7219 | – | – | – | – | – | – |
| 7220 | -23.33 | 1.12 | 1.22 | 3.30 | 1.03 | 0.94 |
| 7221 | -23.60 | 1.15 | 1.25 | 2.65 | 1.05 | 0.94 |
| 7222 | -23.64 | 1.20 | 1.30 | 1.55 | 1.09 | 0.92 |
| 7223 | -23.58 | 1.20 | 1.30 | 1.52 | 1.09 | 0.92 |
| 7224 | -23.50 | 1.21 | 1.30 | 1.51 | 1.09 | 0.92 |
| 7225 | -23.42 | 1.21 | 1.30 | 1.51 | 1.09 | 0.92 |

[Table 624]

657

| | | | | | |
|---|---|---|---|---|---|
| 7226 | -23.33 | 1.21 | 1.30 | 1.51 | 1.10 | 0.92 |
| 7227 | -23.23 | 1.21 | 1.30 | 1.51 | 1.10 | 0.93 |
| 7228 | -23.13 | 1.21 | 1.30 | 1.51 | 1.10 | 0.93 |
| 7229 | -23.04 | 1.21 | 1.29 | 1.51 | 1.10 | 0.93 |
| 7230 | -22.94 | 1.21 | 1.29 | 1.51 | 1.10 | 0.93 |
| 7231 | -22.84 | 1.20 | 1.29 | 1.49 | 1.10 | 0.93 |
| 7232 | -22.75 | 1.20 | 1.28 | 1.46 | 1.10 | 0.93 |
| 7233 | -22.92 | 1.07 | 1.15 | 4.55 | 1.00 | 0.96 |
| 7234 | – | – | – | – | – | – |
| 7235 | – | – | – | – | – | – |
| 7236 | -22.98 | 1.08 | 1.16 | 4.36 | 1.01 | 0.95 |
| 7237 | -23.13 | 1.10 | 1.18 | 3.85 | 1.02 | 0.95 |
| 7238 | -22.93 | 1.15 | 1.23 | 3.04 | 1.05 | 0.93 |
| 7239 | -22.85 | 1.15 | 1.23 | 3.03 | 1.06 | 0.93 |
| 7240 | -22.77 | 1.15 | 1.23 | 3.03 | 1.06 | 0.93 |
| 7241 | -22.68 | 1.15 | 1.23 | 3.03 | 1.06 | 0.93 |
| 7242 | -22.59 | 1.16 | 1.23 | 3.03 | 1.06 | 0.93 |
| 7243 | -22.50 | 1.16 | 1.23 | 3.04 | 1.06 | 0.94 |
| 7244 | -22.40 | 1.16 | 1.23 | 3.04 | 1.07 | 0.94 |
| 7245 | -22.31 | 1.15 | 1.23 | 3.04 | 1.07 | 0.94 |
| 7246 | -22.22 | 1.15 | 1.22 | 3.03 | 1.07 | 0.94 |
| 7247 | -22.13 | 1.15 | 1.22 | 3.01 | 1.07 | 0.94 |
| 7248 | -22.05 | 1.15 | 1.21 | 2.97 | 1.07 | 0.94 |
| 7249 | -22.65 | 1.02 | 1.10 | 5.49 | 0.97 | 0.97 |
| 7250 | – | – | – | – | – | – |
| 7251 | -84.89 | 0.00 | 0.00 | -0.09 | 0.00 | 0.00 |
| 7252 | -22.68 | 1.03 | 1.10 | 5.36 | 0.98 | 0.97 |
| 7253 | -22.70 | 1.05 | 1.12 | 5.00 | 0.99 | 0.96 |
| 7254 | -22.26 | 1.10 | 1.17 | 4.53 | 1.02 | 0.95 |
| 7255 | -22.17 | 1.10 | 1.17 | 4.54 | 1.02 | 0.95 |
| 7256 | -22.08 | 1.10 | 1.17 | 4.55 | 1.02 | 0.95 |
| 7257 | -21.98 | 1.10 | 1.17 | 4.56 | 1.03 | 0.95 |
| 7258 | -21.89 | 1.10 | 1.17 | 4.57 | 1.03 | 0.95 |
| 7259 | -21.80 | 1.10 | 1.16 | 4.58 | 1.03 | 0.95 |
| 7260 | -21.70 | 1.10 | 1.16 | 4.59 | 1.03 | 0.95 |
| 7261 | -21.61 | 1.10 | 1.16 | 4.58 | 1.03 | 0.95 |
| 7262 | -21.52 | 1.10 | 1.15 | 4.57 | 1.03 | 0.95 |
| 7263 | -21.44 | 1.10 | 1.15 | 4.54 | 1.03 | 0.95 |
| 7264 | -21.37 | 1.09 | 1.14 | 4.50 | 1.03 | 0.95 |
| 7265 | -22.44 | 0.98 | 1.04 | 6.37 | 0.95 | 0.99 |
| 7266 | – | – | – | – | – | – |
| 7267 | – | – | – | – | – | – |
| 7268 | -22.42 | 0.98 | 1.05 | 6.30 | 0.95 | 0.98 |
| 7269 | -22.34 | 1.00 | 1.07 | 6.10 | 0.96 | 0.97 |
| 7270 | -21.65 | 1.05 | 1.10 | 5.99 | 0.99 | 0.96 |
| 7271 | -21.55 | 1.05 | 1.10 | 6.01 | 0.99 | 0.96 |
| 7272 | -21.45 | 1.05 | 1.10 | 6.04 | 0.99 | 0.96 |
| 7273 | -21.35 | 1.05 | 1.10 | 6.07 | 0.99 | 0.96 |
| 7274 | -21.25 | 1.05 | 1.10 | 6.09 | 0.99 | 0.96 |
| 7275 | -21.15 | 1.05 | 1.10 | 6.11 | 1.00 | 0.96 |

[Table 625]

| | | | | | | |
|---|---|---|---|---|---|---|
| 7276 | -21.06 | 1.05 | 1.10 | 6.12 | 1.00 | 0.96 |
| 7277 | -20.97 | 1.05 | 1.09 | 6.11 | 1.00 | 0.96 |
| 7278 | -20.88 | 1.05 | 1.09 | 6.10 | 1.00 | 0.96 |
| 7279 | -20.81 | 1.04 | 1.08 | 6.07 | 1.00 | 0.96 |
| 7280 | -20.73 | 1.04 | 1.08 | 6.02 | 0.99 | 0.97 |
| 7281 | -22.28 | 0.93 | 0.99 | 7.17 | 0.92 | 1.00 |
| 7282 | — | — | — | — | — | — |
| 7283 | — | — | — | — | — | — |
| 7284 | -22.23 | 0.94 | 1.00 | 7.15 | 0.92 | 1.00 |
| 7285 | -22.05 | 0.96 | 1.01 | 7.11 | 0.93 | 0.99 |
| 7286 | -21.12 | 1.00 | 1.04 | 7.38 | 0.95 | 0.97 |
| 7287 | -21.01 | 1.00 | 1.04 | 7.43 | 0.96 | 0.97 |
| 7288 | -20.91 | 1.00 | 1.04 | 7.47 | 0.96 | 0.97 |
| 7289 | -20.80 | 1.00 | 1.04 | 7.51 | 0.96 | 0.97 |
| 7290 | -20.69 | 1.00 | 1.04 | 7.55 | 0.96 | 0.97 |
| 7291 | -20.59 | 1.00 | 1.04 | 7.57 | 0.96 | 0.97 |
| 7292 | -20.49 | 1.00 | 1.03 | 7.59 | 0.96 | 0.97 |
| 7293 | -20.40 | 1.00 | 1.03 | 7.59 | 0.96 | 0.97 |
| 7294 | -20.32 | 1.00 | 1.03 | 7.58 | 0.96 | 0.98 |
| 7295 | -20.25 | 0.99 | 1.02 | 7.54 | 0.96 | 0.98 |
| 7296 | -20.18 | 0.99 | 1.02 | 7.49 | 0.96 | 0.98 |
| 7297 | -22.19 | 0.89 | 0.94 | 7.86 | 0.89 | 1.01 |
| 7298 | — | — | — | — | — | — |
| 7299 | — | — | — | — | — | — |
| 7300 | -22.11 | 0.90 | 0.95 | 7.89 | 0.89 | 1.01 |
| 7301 | -21.84 | 0.91 | 0.96 | 8.02 | 0.90 | 1.00 |
| 7302 | -20.70 | 0.95 | 0.98 | 8.67 | 0.92 | 0.99 |
| 7303 | -20.58 | 0.95 | 0.98 | 8.74 | 0.92 | 0.99 |
| 7304 | -20.46 | 0.95 | 0.98 | 8.81 | 0.93 | 0.99 |
| 7305 | -20.35 | 0.95 | 0.98 | 8.86 | 0.93 | 0.99 |
| 7306 | -20.24 | 0.95 | 0.98 | 8.91 | 0.93 | 0.99 |
| 7307 | -20.13 | 0.95 | 0.98 | 8.95 | 0.93 | 0.99 |
| 7308 | -20.03 | 0.95 | 0.97 | 8.97 | 0.93 | 0.99 |
| 7309 | -19.94 | 0.95 | 0.97 | 8.98 | 0.93 | 0.99 |
| 7310 | -19.86 | 0.94 | 0.97 | 8.97 | 0.93 | 0.99 |
| 7311 | -19.79 | 0.94 | 0.96 | 8.93 | 0.93 | 0.99 |
| 7312 | -19.73 | 0.94 | 0.96 | 8.87 | 0.92 | 0.99 |
| 7313 | -22.17 | 0.85 | 0.89 | 8.43 | 0.86 | 1.03 |
| 7314 | — | — | — | — | — | — |
| 7315 | — | — | — | — | — | — |
| 7316 | -22.06 | 0.85 | 0.90 | 8.52 | 0.86 | 1.02 |
| 7317 | -21.71 | 0.87 | 0.91 | 8.80 | 0.87 | 1.02 |
| 7318 | -20.39 | 0.90 | 0.93 | 9.84 | 0.89 | 1.00 |
| 7319 | -20.26 | 0.90 | 0.93 | 9.93 | 0.89 | 1.00 |
| 7320 | -20.14 | 0.90 | 0.93 | 10.01 | 0.89 | 1.00 |
| 7321 | -20.02 | 0.90 | 0.92 | 10.09 | 0.89 | 1.00 |
| 7322 | -19.90 | 0.90 | 0.92 | 10.15 | 0.90 | 1.00 |
| 7323 | -19.79 | 0.90 | 0.92 | 10.20 | 0.90 | 1.00 |
| 7324 | -19.69 | 0.90 | 0.92 | 10.23 | 0.90 | 1.00 |
| 7325 | -19.60 | 0.90 | 0.91 | 10.25 | 0.90 | 1.01 |

[Table 626]

| 7326 | -19.52 | 0.90 | 0.91 | 10.24 | 0.89 | 1.01 |
|------|--------|------|------|-------|------|------|
| 7327 | -19.45 | 0.89 | 0.90 | 10.20 | 0.89 | 1.01 |
| 7328 | -19.40 | 0.89 | 0.90 | 10.13 | 0.89 | 1.01 |
| 7329 | -22.24 | 0.81 | 0.84 | 8.86 | 0.83 | 1.04 |
| 7330 | — | — | — | — | — | — |
| 7331 | — | — | — | — | — | — |
| 7332 | -22.10 | 0.81 | 0.85 | 9.00 | 0.83 | 1.04 |
| 7333 | -21.68 | 0.82 | 0.86 | 9.44 | 0.84 | 1.03 |
| 7334 | -20.20 | 0.85 | 0.87 | 10.85 | 0.86 | 1.02 |
| 7335 | -20.07 | 0.85 | 0.87 | 10.96 | 0.86 | 1.02 |
| 7336 | -19.94 | 0.85 | 0.87 | 11.07 | 0.86 | 1.02 |
| 7337 | -19.81 | 0.85 | 0.87 | 11.17 | 0.86 | 1.02 |
| 7338 | -19.69 | 0.85 | 0.87 | 11.24 | 0.86 | 1.02 |
| 7339 | -19.58 | 0.85 | 0.87 | 11.31 | 0.86 | 1.02 |
| 7340 | -19.48 | 0.85 | 0.86 | 11.35 | 0.86 | 1.02 |
| 7341 | -19.39 | 0.85 | 0.86 | 11.36 | 0.86 | 1.02 |
| 7342 | -19.31 | 0.85 | 0.86 | 11.36 | 0.86 | 1.02 |
| 7343 | -19.25 | 0.84 | 0.85 | 11.32 | 0.86 | 1.02 |
| 7344 | -19.20 | 0.84 | 0.84 | 11.25 | 0.86 | 1.03 |
| 7345 | -22.41 | 0.76 | 0.80 | 9.13 | 0.79 | 1.05 |
| 7346 | — | — | — | — | — | — |
| 7347 | — | — | — | — | — | — |
| 7348 | -22.25 | 0.77 | 0.80 | 9.32 | 0.80 | 1.05 |
| 7349 | -21.75 | 0.78 | 0.81 | 9.91 | 0.81 | 1.05 |
| 7350 | -20.15 | 0.81 | 0.82 | 11.69 | 0.83 | 1.04 |
| 7351 | -20.00 | 0.81 | 0.82 | 11.83 | 0.83 | 1.04 |
| 7352 | -19.87 | 0.81 | 0.82 | 11.95 | 0.83 | 1.04 |
| 7353 | -19.74 | 0.81 | 0.82 | 12.06 | 0.83 | 1.04 |
| 7354 | -19.62 | 0.81 | 0.82 | 12.16 | 0.83 | 1.04 |
| 7355 | -19.51 | 0.81 | 0.81 | 12.23 | 0.83 | 1.04 |
| 7356 | -19.40 | 0.80 | 0.81 | 12.28 | 0.83 | 1.04 |
| 7357 | -19.32 | 0.80 | 0.81 | 12.30 | 0.83 | 1.04 |
| 7358 | -19.24 | 0.80 | 0.80 | 12.29 | 0.83 | 1.04 |
| 7359 | -19.18 | 0.80 | 0.80 | 12.25 | 0.83 | 1.04 |
| 7360 | -19.14 | 0.79 | 0.79 | 12.18 | 0.82 | 1.04 |
| 7361 | -22.69 | 0.72 | 0.75 | 9.21 | 0.76 | 1.06 |
| 7362 | — | — | — | — | — | — |
| 7363 | — | — | — | — | — | — |
| 7364 | -22.50 | 0.73 | 0.75 | 9.46 | 0.76 | 1.06 |
| 7365 | -21.95 | 0.74 | 0.76 | 10.18 | 0.77 | 1.06 |
| 7366 | -20.22 | 0.76 | 0.77 | 12.32 | 0.80 | 1.05 |
| 7367 | -20.07 | 0.76 | 0.77 | 12.48 | 0.80 | 1.05 |
| 7368 | -19.93 | 0.76 | 0.77 | 12.63 | 0.80 | 1.06 |
| 7369 | -19.80 | 0.76 | 0.77 | 12.76 | 0.80 | 1.06 |
| 7370 | -19.68 | 0.76 | 0.77 | 12.87 | 0.80 | 1.06 |
| 7371 | -19.56 | 0.76 | 0.77 | 12.95 | 0.80 | 1.06 |
| 7372 | -19.46 | 0.76 | 0.76 | 13.01 | 0.80 | 1.06 |
| 7373 | -19.38 | 0.76 | 0.76 | 13.03 | 0.80 | 1.06 |
| 7374 | -19.31 | 0.75 | 0.76 | 13.03 | 0.80 | 1.06 |
| 7375 | -19.25 | 0.75 | 0.75 | 12.98 | 0.79 | 1.06 |

[Table 627]

| 7376 | -19.22 | 0.75 | 0.74 | 12.90 | 0.79 | 1.06 |
|---|---|---|---|---|---|---|
| 7377 | -23.09 | 0.68 | 0.70 | 9.09 | 0.73 | 1.07 |
| 7378 | — | — | — | — | — | — |
| 7379 | — | — | — | — | — | — |
| 7380 | -22.89 | 0.69 | 0.71 | 9.39 | 0.73 | 1.07 |
| 7381 | -22.27 | 0.70 | 0.71 | 10.25 | 0.74 | 1.07 |
| 7382 | -20.43 | 0.72 | 0.73 | 12.73 | 0.76 | 1.07 |
| 7383 | -20.28 | 0.72 | 0.73 | 12.92 | 0.77 | 1.07 |
| 7384 | -20.13 | 0.72 | 0.72 | 13.08 | 0.77 | 1.07 |
| 7385 | -20.00 | 0.72 | 0.72 | 13.23 | 0.77 | 1.08 |
| 7386 | -19.87 | 0.72 | 0.72 | 13.35 | 0.77 | 1.08 |
| 7387 | -19.76 | 0.72 | 0.72 | 13.44 | 0.77 | 1.08 |
| 7388 | -19.67 | 0.72 | 0.72 | 13.50 | 0.77 | 1.08 |
| 7389 | -19.58 | 0.71 | 0.71 | 13.53 | 0.77 | 1.08 |
| 7390 | -19.52 | 0.71 | 0.71 | 13.52 | 0.76 | 1.08 |
| 7391 | -19.47 | 0.71 | 0.70 | 13.47 | 0.76 | 1.08 |
| 7392 | -19.44 | 0.70 | 0.70 | 13.38 | 0.76 | 1.08 |
| 7393 | -23.64 | 0.64 | 0.66 | 8.75 | 0.69 | 1.08 |
| 7394 | — | — | — | — | — | — |
| 7395 | — | — | — | — | — | — |
| 7396 | -23.41 | 0.65 | 0.66 | 9.09 | 0.69 | 1.08 |
| 7397 | -22.75 | 0.66 | 0.67 | 10.08 | 0.70 | 1.08 |
| 7398 | -20.79 | 0.68 | 0.68 | 12.89 | 0.73 | 1.09 |
| 7399 | -20.63 | 0.68 | 0.68 | 13.09 | 0.73 | 1.09 |
| 7400 | -20.48 | 0.68 | 0.68 | 13.28 | 0.73 | 1.09 |
| 7401 | -20.35 | 0.68 | 0.68 | 13.43 | 0.73 | 1.09 |
| 7402 | -20.22 | 0.68 | 0.68 | 13.56 | 0.74 | 1.10 |
| 7403 | -20.11 | 0.67 | 0.67 | 13.66 | 0.74 | 1.10 |
| 7404 | -20.01 | 0.67 | 0.67 | 13.73 | 0.73 | 1.10 |
| 7405 | -19.93 | 0.67 | 0.67 | 13.76 | 0.73 | 1.10 |
| 7406 | -19.87 | 0.67 | 0.66 | 13.74 | 0.73 | 1.10 |
| 7407 | -19.83 | 0.66 | 0.66 | 13.69 | 0.73 | 1.10 |
| 7408 | -19.82 | 0.66 | 0.65 | 13.58 | 0.72 | 1.10 |
| 7409 | -24.36 | 0.60 | 0.61 | 8.17 | 0.65 | 1.09 |
| 7410 | — | — | — | — | — | — |
| 7411 | — | — | — | — | — | — |
| 7412 | -24.11 | 0.61 | 0.61 | 8.55 | 0.65 | 1.09 |
| 7413 | -23.38 | 0.62 | 0.62 | 9.66 | 0.67 | 1.09 |
| 7414 | -21.31 | 0.63 | 0.64 | 12.76 | 0.70 | 1.11 |
| 7415 | -21.14 | 0.63 | 0.64 | 12.99 | 0.70 | 1.11 |
| 7416 | -20.99 | 0.63 | 0.64 | 13.18 | 0.70 | 1.11 |
| 7417 | -20.85 | 0.63 | 0.63 | 13.35 | 0.70 | 1.11 |
| 7418 | -20.72 | 0.63 | 0.63 | 13.49 | 0.70 | 1.11 |
| 7419 | -20.61 | 0.63 | 0.63 | 13.60 | 0.70 | 1.12 |
| 7420 | -20.52 | 0.63 | 0.63 | 13.66 | 0.70 | 1.12 |
| 7421 | -20.44 | 0.63 | 0.62 | 13.69 | 0.70 | 1.12 |
| 7422 | -20.39 | 0.63 | 0.62 | 13.67 | 0.70 | 1.12 |
| 7423 | -20.36 | 0.62 | 0.61 | 13.60 | 0.69 | 1.12 |
| 7424 | -20.36 | 0.62 | 0.61 | 13.47 | 0.69 | 1.12 |
| 7425 | -25.27 | 0.56 | 0.56 | 7.35 | 0.61 | 1.09 |

[Table 628]

| 7426 | — | — | — | — | — | — |
|------|-------|------|------|-------|------|------|
| 7427 | — | — | — | — | — | — |
| 7428 | -25.00 | 0.56 | 0.57 | 7.76 | 0.61 | 1.09 |
| 7429 | -24.21 | 0.57 | 0.58 | 8.97 | 0.63 | 1.10 |
| 7430 | -22.00 | 0.59 | 0.59 | 12.33 | 0.66 | 1.12 |
| 7431 | -21.83 | 0.59 | 0.59 | 12.56 | 0.66 | 1.12 |
| 7432 | -21.67 | 0.59 | 0.59 | 12.77 | 0.66 | 1.13 |
| 7433 | -21.53 | 0.59 | 0.59 | 12.95 | 0.67 | 1.13 |
| 7434 | -21.40 | 0.59 | 0.59 | 13.09 | 0.67 | 1.13 |
| 7435 | -21.29 | 0.59 | 0.59 | 13.19 | 0.67 | 1.13 |
| 7436 | -21.20 | 0.59 | 0.58 | 13.26 | 0.67 | 1.14 |
| 7437 | -21.12 | 0.59 | 0.58 | 13.28 | 0.66 | 1.14 |
| 7438 | -21.08 | 0.58 | 0.58 | 13.24 | 0.66 | 1.14 |
| 7439 | -21.06 | 0.58 | 0.57 | 13.15 | 0.66 | 1.14 |
| 7440 | -21.07 | 0.58 | 0.57 | 13.01 | 0.65 | 1.14 |
| 7441 | -22.33 | 1.14 | 1.24 | 3.57 | 1.05 | 0.94 |
| 7442 | — | — | — | — | — | — |
| 7443 | — | — | — | — | — | — |
| 7444 | -22.43 | 1.15 | 1.25 | 3.33 | 1.06 | 0.94 |
| 7445 | -22.68 | 1.17 | 1.27 | 2.67 | 1.07 | 0.93 |
| 7446 | -22.63 | 1.22 | 1.32 | 1.61 | 1.11 | 0.92 |
| 7447 | -22.55 | 1.23 | 1.32 | 1.59 | 1.11 | 0.92 |
| 7448 | -22.47 | 1.23 | 1.32 | 1.57 | 1.11 | 0.92 |
| 7449 | -22.37 | 1.23 | 1.32 | 1.57 | 1.12 | 0.92 |
| 7450 | -22.27 | 1.23 | 1.32 | 1.57 | 1.12 | 0.92 |
| 7451 | -22.17 | 1.23 | 1.32 | 1.57 | 1.12 | 0.93 |
| 7452 | -22.06 | 1.23 | 1.32 | 1.57 | 1.12 | 0.93 |
| 7453 | -21.95 | 1.23 | 1.32 | 1.57 | 1.12 | 0.93 |
| 7454 | -21.84 | 1.23 | 1.31 | 1.56 | 1.13 | 0.93 |
| 7455 | -21.73 | 1.22 | 1.31 | 1.55 | 1.13 | 0.93 |
| 7456 | -21.63 | 1.22 | 1.30 | 1.52 | 1.13 | 0.93 |
| 7457 | -21.96 | 1.09 | 1.18 | 4.64 | 1.03 | 0.95 |
| 7458 | — | — | — | — | — | — |
| 7459 | — | — | — | — | — | — |
| 7460 | -22.02 | 1.10 | 1.19 | 4.45 | 1.03 | 0.95 |
| 7461 | -22.15 | 1.12 | 1.21 | 3.94 | 1.04 | 0.94 |
| 7462 | -21.84 | 1.17 | 1.25 | 3.17 | 1.08 | 0.93 |
| 7463 | -21.76 | 1.17 | 1.25 | 3.16 | 1.08 | 0.93 |
| 7464 | -21.66 | 1.17 | 1.25 | 3.16 | 1.08 | 0.93 |
| 7465 | -21.56 | 1.18 | 1.25 | 3.16 | 1.08 | 0.93 |
| 7466 | -21.46 | 1.18 | 1.25 | 3.17 | 1.08 | 0.93 |
| 7467 | -21.36 | 1.18 | 1.25 | 3.17 | 1.09 | 0.94 |
| 7468 | -21.25 | 1.18 | 1.25 | 3.17 | 1.09 | 0.94 |
| 7469 | -21.15 | 1.17 | 1.24 | 3.17 | 1.09 | 0.94 |
| 7470 | -21.04 | 1.17 | 1.24 | 3.16 | 1.09 | 0.94 |
| 7471 | -20.94 | 1.17 | 1.24 | 3.13 | 1.09 | 0.94 |
| 7472 | -20.85 | 1.17 | 1.23 | 3.09 | 1.09 | 0.94 |
| 7473 | -21.64 | 1.05 | 1.12 | 5.65 | 1.00 | 0.97 |
| 7474 | — | — | — | — | — | — |
| 7475 | — | — | — | — | — | — |

[Table 629]

| 7476 | -21.66 | 1.05 | 1.13 | 5.51 | 1.00 | 0.97 |
|------|--------|------|------|------|------|------|
| 7477 | -21.67 | 1.07 | 1.15 | 5.16 | 1.01 | 0.96 |
| 7478 | -21.11 | 1.12 | 1.19 | 4.72 | 1.04 | 0.94 |
| 7479 | -21.01 | 1.12 | 1.19 | 4.73 | 1.04 | 0.94 |
| 7480 | -20.91 | 1.12 | 1.19 | 4.74 | 1.05 | 0.94 |
| 7481 | -20.81 | 1.12 | 1.19 | 4.75 | 1.05 | 0.95 |
| 7482 | -20.70 | 1.12 | 1.18 | 4.76 | 1.05 | 0.95 |
| 7483 | -20.60 | 1.12 | 1.18 | 4.77 | 1.05 | 0.95 |
| 7484 | -20.49 | 1.12 | 1.18 | 4.78 | 1.05 | 0.95 |
| 7485 | -20.39 | 1.12 | 1.18 | 4.77 | 1.05 | 0.95 |
| 7486 | -20.29 | 1.12 | 1.17 | 4.76 | 1.05 | 0.95 |
| 7487 | -20.20 | 1.12 | 1.17 | 4.73 | 1.05 | 0.95 |
| 7488 | -20.11 | 1.11 | 1.16 | 4.68 | 1.05 | 0.95 |
| 7489 | -21.38 | 1.00 | 1.07 | 6.60 | 0.97 | 0.98 |
| 7490 | — | — | — | — | — | — |
| 7491 | — | — | — | — | — | — |
| 7492 | -21.36 | 1.01 | 1.07 | 6.51 | 0.97 | 0.98 |
| 7493 | -21.26 | 1.03 | 1.09 | 6.31 | 0.98 | 0.97 |
| 7494 | -20.45 | 1.07 | 1.12 | 6.23 | 1.01 | 0.96 |
| 7495 | -20.35 | 1.07 | 1.12 | 6.25 | 1.01 | 0.96 |
| 7496 | -20.23 | 1.07 | 1.12 | 6.28 | 1.01 | 0.96 |
| 7497 | -20.12 | 1.07 | 1.12 | 6.30 | 1.01 | 0.96 |
| 7498 | -20.01 | 1.07 | 1.12 | 6.33 | 1.02 | 0.96 |
| 7499 | -19.91 | 1.07 | 1.12 | 6.34 | 1.02 | 0.96 |
| 7500 | -19.80 | 1.07 | 1.11 | 6.35 | 1.02 | 0.96 |
| 7501 | -19.70 | 1.07 | 1.11 | 6.35 | 1.02 | 0.96 |
| 7502 | -19.60 | 1.06 | 1.11 | 6.33 | 1.02 | 0.96 |
| 7503 | -19.52 | 1.06 | 1.10 | 6.29 | 1.02 | 0.96 |
| 7504 | -19.44 | 1.06 | 1.09 | 6.24 | 1.02 | 0.97 |
| 7505 | -21.18 | 0.96 | 1.02 | 7.46 | 0.94 | 1.00 |
| 7506 | — | — | — | — | — | — |
| 7507 | — | — | — | — | — | — |
| 7508 | -21.12 | 0.96 | 1.02 | 7.43 | 0.94 | 0.99 |
| 7509 | -20.92 | 0.98 | 1.03 | 7.38 | 0.95 | 0.99 |
| 7510 | -19.90 | 1.01 | 1.06 | 7.65 | 0.98 | 0.97 |
| 7511 | -19.78 | 1.02 | 1.06 | 7.70 | 0.98 | 0.97 |
| 7512 | -19.66 | 1.02 | 1.06 | 7.74 | 0.98 | 0.97 |
| 7513 | -19.54 | 1.02 | 1.06 | 7.78 | 0.98 | 0.97 |
| 7514 | -19.43 | 1.02 | 1.06 | 7.82 | 0.98 | 0.97 |
| 7515 | -19.32 | 1.02 | 1.05 | 7.84 | 0.98 | 0.97 |
| 7516 | -19.21 | 1.02 | 1.05 | 7.85 | 0.98 | 0.97 |
| 7517 | -19.11 | 1.01 | 1.05 | 7.85 | 0.98 | 0.98 |
| 7518 | -19.02 | 1.01 | 1.04 | 7.83 | 0.98 | 0.98 |
| 7519 | -18.93 | 1.01 | 1.04 | 7.79 | 0.98 | 0.98 |
| 7520 | -18.86 | 1.00 | 1.03 | 7.73 | 0.98 | 0.98 |
| 7521 | -21.04 | 0.91 | 0.96 | 8.22 | 0.91 | 1.01 |
| 7522 | — | — | — | — | — | — |
| 7523 | — | — | — | — | — | — |
| 7524 | -20.96 | 0.92 | 0.97 | 8.24 | 0.91 | 1.01 |
| 7525 | -20.66 | 0.93 | 0.98 | 8.34 | 0.92 | 1.00 |

[Table 630]

663

| | | | | | | |
|---|---|---|---|---|---|---|
| 7526 | -19.45 | 0.96 | 1.00 | 8.97 | 0.94 | 0.99 |
| 7527 | -19.32 | 0.97 | 1.00 | 9.04 | 0.94 | 0.99 |
| 7528 | -19.20 | 0.97 | 1.00 | 9.10 | 0.95 | 0.99 |
| 7529 | -19.07 | 0.97 | 1.00 | 9.16 | 0.95 | 0.99 |
| 7530 | -18.96 | 0.97 | 1.00 | 9.20 | 0.95 | 0.99 |
| 7531 | -18.84 | 0.97 | 0.99 | 9.23 | 0.95 | 0.99 |
| 7532 | -18.74 | 0.96 | 0.99 | 9.25 | 0.95 | 0.99 |
| 7533 | -18.64 | 0.96 | 0.99 | 9.25 | 0.95 | 0.99 |
| 7534 | -18.55 | 0.96 | 0.98 | 9.23 | 0.95 | 0.99 |
| 7535 | -18.47 | 0.96 | 0.98 | 9.19 | 0.95 | 0.99 |
| 7536 | -18.40 | 0.95 | 0.97 | 9.12 | 0.94 | 0.99 |
| 7537 | -20.99 | 0.87 | 0.91 | 8.85 | 0.88 | 1.02 |
| 7538 | — | — | — | — | — | — |
| 7539 | — | — | — | — | — | — |
| 7540 | -20.87 | 0.87 | 0.92 | 8.93 | 0.88 | 1.02 |
| 7541 | -20.50 | 0.89 | 0.93 | 9.18 | 0.89 | 1.01 |
| 7542 | -19.13 | 0.92 | 0.94 | 10.16 | 0.91 | 1.00 |
| 7543 | -18.99 | 0.92 | 0.94 | 10.24 | 0.91 | 1.00 |
| 7544 | -18.86 | 0.92 | 0.94 | 10.32 | 0.91 | 1.00 |
| 7545 | -18.74 | 0.92 | 0.94 | 10.39 | 0.91 | 1.00 |
| 7546 | -18.61 | 0.92 | 0.94 | 10.45 | 0.91 | 1.00 |
| 7547 | -18.50 | 0.92 | 0.94 | 10.49 | 0.91 | 1.00 |
| 7548 | -18.39 | 0.91 | 0.93 | 10.51 | 0.91 | 1.01 |
| 7549 | -18.29 | 0.91 | 0.93 | 10.52 | 0.91 | 1.01 |
| 7550 | -18.21 | 0.91 | 0.92 | 10.50 | 0.91 | 1.01 |
| 7551 | -18.13 | 0.91 | 0.92 | 10.45 | 0.91 | 1.01 |
| 7552 | -18.07 | 0.90 | 0.91 | 10.38 | 0.91 | 1.01 |
| 7553 | -21.02 | 0.83 | 0.86 | 9.35 | 0.85 | 1.04 |
| 7554 | — | — | — | — | — | — |
| 7555 | — | — | — | — | — | — |
| 7556 | -20.88 | 0.83 | 0.87 | 9.48 | 0.85 | 1.04 |
| 7557 | -20.44 | 0.84 | 0.88 | 9.87 | 0.86 | 1.03 |
| 7558 | -18.93 | 0.87 | 0.89 | 11.18 | 0.88 | 1.02 |
| 7559 | -18.79 | 0.87 | 0.89 | 11.29 | 0.88 | 1.02 |
| 7560 | -18.66 | 0.87 | 0.89 | 11.39 | 0.88 | 1.02 |
| 7561 | -18.53 | 0.87 | 0.89 | 11.47 | 0.88 | 1.02 |
| 7562 | -18.40 | 0.87 | 0.88 | 11.54 | 0.88 | 1.02 |
| 7563 | -18.29 | 0.87 | 0.88 | 11.59 | 0.88 | 1.02 |
| 7564 | -18.18 | 0.87 | 0.88 | 11.62 | 0.88 | 1.02 |
| 7565 | -18.09 | 0.86 | 0.87 | 11.62 | 0.88 | 1.02 |
| 7566 | -18.01 | 0.86 | 0.87 | 11.60 | 0.88 | 1.03 |
| 7567 | -17.93 | 0.86 | 0.86 | 11.55 | 0.88 | 1.03 |
| 7568 | -17.88 | 0.85 | 0.86 | 11.47 | 0.87 | 1.03 |
| 7569 | -21.15 | 0.78 | 0.82 | 9.68 | 0.82 | 1.05 |
| 7570 | — | — | — | — | — | — |
| 7571 | — | — | — | — | — | — |
| 7572 | -20.99 | 0.79 | 0.82 | 9.86 | 0.82 | 1.05 |
| 7573 | -20.49 | 0.80 | 0.83 | 10.39 | 0.83 | 1.04 |
| 7574 | -18.87 | 0.82 | 0.84 | 12.03 | 0.85 | 1.04 |
| 7575 | -18.73 | 0.82 | 0.84 | 12.16 | 0.85 | 1.04 |

[Table 631]

664

| 7576 | -18.59 | 0.82 | 0.84 | 12.27 | 0.85 | 1.04 |
|---|---|---|---|---|---|---|
| 7577 | -18.46 | 0.82 | 0.83 | 12.37 | 0.85 | 1.04 |
| 7578 | -18.33 | 0.82 | 0.83 | 12.44 | 0.85 | 1.04 |
| 7579 | -18.22 | 0.82 | 0.83 | 12.50 | 0.85 | 1.04 |
| 7580 | -18.11 | 0.82 | 0.83 | 12.54 | 0.85 | 1.04 |
| 7581 | -18.02 | 0.82 | 0.82 | 12.54 | 0.85 | 1.04 |
| 7582 | -17.94 | 0.81 | 0.82 | 12.52 | 0.85 | 1.04 |
| 7583 | -17.88 | 0.81 | 0.81 | 12.46 | 0.84 | 1.04 |
| 7584 | -17.83 | 0.81 | 0.81 | 12.37 | 0.84 | 1.05 |
| 7585 | -21.39 | 0.74 | 0.77 | 9.83 | 0.78 | 1.06 |
| 7586 | – | – | – | – | – | – |
| 7587 | – | – | – | – | – | – |
| 7588 | -21.21 | 0.75 | 0.77 | 10.05 | 0.79 | 1.06 |
| 7589 | -20.66 | 0.76 | 0.78 | 10.72 | 0.79 | 1.06 |
| 7590 | -18.94 | 0.78 | 0.79 | 12.67 | 0.81 | 1.05 |
| 7591 | -18.79 | 0.78 | 0.79 | 12.82 | 0.82 | 1.06 |
| 7592 | -18.65 | 0.78 | 0.79 | 12.95 | 0.82 | 1.06 |
| 7593 | -18.52 | 0.78 | 0.78 | 13.05 | 0.82 | 1.06 |
| 7594 | -18.40 | 0.78 | 0.78 | 13.14 | 0.82 | 1.06 |
| 7595 | -18.28 | 0.77 | 0.78 | 13.21 | 0.82 | 1.06 |
| 7596 | -18.18 | 0.77 | 0.78 | 13.24 | 0.82 | 1.06 |
| 7597 | -18.10 | 0.77 | 0.77 | 13.25 | 0.82 | 1.06 |
| 7598 | -18.02 | 0.77 | 0.77 | 13.22 | 0.81 | 1.06 |
| 7599 | -17.97 | 0.76 | 0.76 | 13.16 | 0.81 | 1.06 |
| 7600 | -17.93 | 0.76 | 0.76 | 13.05 | 0.81 | 1.06 |
| 7601 | -21.76 | 0.70 | 0.72 | 9.78 | 0.75 | 1.07 |
| 7602 | – | – | – | – | – | – |
| 7603 | – | – | – | – | – | – |
| 7604 | -21.56 | 0.71 | 0.73 | 10.05 | 0.75 | 1.07 |
| 7605 | -20.96 | 0.72 | 0.73 | 10.84 | 0.76 | 1.07 |
| 7606 | -19.15 | 0.73 | 0.74 | 13.09 | 0.78 | 1.07 |
| 7607 | -19.00 | 0.73 | 0.74 | 13.25 | 0.78 | 1.07 |
| 7608 | -18.86 | 0.73 | 0.74 | 13.39 | 0.78 | 1.07 |
| 7609 | -18.73 | 0.73 | 0.74 | 13.51 | 0.78 | 1.08 |
| 7610 | -18.61 | 0.73 | 0.74 | 13.61 | 0.78 | 1.08 |
| 7611 | -18.49 | 0.73 | 0.73 | 13.68 | 0.78 | 1.08 |
| 7612 | -18.40 | 0.73 | 0.73 | 13.71 | 0.78 | 1.08 |
| 7613 | -18.31 | 0.73 | 0.73 | 13.72 | 0.78 | 1.08 |
| 7614 | -18.25 | 0.72 | 0.72 | 13.68 | 0.78 | 1.08 |
| 7615 | -18.20 | 0.72 | 0.71 | 13.61 | 0.78 | 1.08 |
| 7616 | -18.17 | 0.71 | 0.71 | 13.49 | 0.77 | 1.08 |
| 7617 | -22.27 | 0.66 | 0.68 | 9.52 | 0.71 | 1.08 |
| 7618 | – | – | – | – | – | – |
| 7619 | – | – | – | – | – | – |
| 7620 | -22.05 | 0.66 | 0.68 | 9.83 | 0.71 | 1.08 |
| 7621 | -21.41 | 0.67 | 0.69 | 10.73 | 0.72 | 1.08 |
| 7622 | -19.51 | 0.69 | 0.70 | 13.26 | 0.75 | 1.09 |
| 7623 | -19.36 | 0.69 | 0.69 | 13.43 | 0.75 | 1.09 |
| 7624 | -19.22 | 0.69 | 0.69 | 13.58 | 0.75 | 1.09 |
| 7625 | -19.08 | 0.69 | 0.69 | 13.71 | 0.75 | 1.09 |

[Table 632]

| 7626 | -18.96 | 0.69 | 0.69 | 13.81 | 0.75 | 1.10 |
|---|---|---|---|---|---|---|
| 7627 | -18.85 | 0.69 | 0.69 | 13.88 | 0.75 | 1.10 |
| 7628 | -18.76 | 0.68 | 0.68 | 13.92 | 0.75 | 1.10 |
| 7629 | -18.68 | 0.68 | 0.68 | 13.92 | 0.75 | 1.10 |
| 7630 | -18.62 | 0.68 | 0.67 | 13.88 | 0.75 | 1.10 |
| 7631 | -18.59 | 0.67 | 0.67 | 13.79 | 0.74 | 1.10 |
| 7632 | -18.57 | 0.67 | 0.66 | 13.65 | 0.74 | 1.10 |
| 7633 | -22.94 | 0.62 | 0.63 | 9.01 | 0.67 | 1.09 |
| 7634 | − | − | − | − | − | − |
| 7635 | − | − | − | − | − | − |
| 7636 | -22.70 | 0.62 | 0.63 | 9.36 | 0.68 | 1.09 |
| 7637 | -22.01 | 0.63 | 0.64 | 10.37 | 0.69 | 1.09 |
| 7638 | -20.03 | 0.65 | 0.65 | 13.14 | 0.71 | 1.11 |
| 7639 | -19.87 | 0.65 | 0.65 | 13.33 | 0.72 | 1.11 |
| 7640 | -19.73 | 0.65 | 0.65 | 13.49 | 0.72 | 1.11 |
| 7641 | -19.59 | 0.65 | 0.65 | 13.63 | 0.72 | 1.11 |
| 7642 | -19.47 | 0.65 | 0.64 | 13.73 | 0.72 | 1.11 |
| 7643 | -19.37 | 0.64 | 0.64 | 13.80 | 0.72 | 1.12 |
| 7644 | -19.28 | 0.64 | 0.64 | 13.83 | 0.72 | 1.12 |
| 7645 | -19.21 | 0.64 | 0.63 | 13.82 | 0.71 | 1.12 |
| 7646 | -19.16 | 0.64 | 0.63 | 13.76 | 0.71 | 1.12 |
| 7647 | -19.14 | 0.63 | 0.62 | 13.66 | 0.71 | 1.12 |
| 7648 | -19.14 | 0.63 | 0.62 | 13.50 | 0.70 | 1.12 |
| 7649 | -21.54 | 1.16 | 1.26 | 3.43 | 1.07 | 0.94 |
| 7650 | − | − | − | − | − | − |
| 7651 | − | − | − | − | − | − |
| 7652 | -21.64 | 1.17 | 1.27 | 3.19 | 1.08 | 0.94 |
| 7653 | -21.86 | 1.19 | 1.29 | 2.56 | 1.09 | 0.93 |
| 7654 | -21.67 | 1.24 | 1.34 | 1.59 | 1.13 | 0.92 |
| 7655 | -21.57 | 1.24 | 1.34 | 1.57 | 1.13 | 0.92 |
| 7656 | -21.47 | 1.24 | 1.34 | 1.57 | 1.13 | 0.92 |
| 7657 | -21.36 | 1.24 | 1.34 | 1.57 | 1.14 | 0.92 |
| 7658 | -21.25 | 1.24 | 1.34 | 1.57 | 1.14 | 0.92 |
| 7659 | -21.13 | 1.24 | 1.33 | 1.58 | 1.14 | 0.93 |
| 7660 | -21.01 | 1.24 | 1.33 | 1.58 | 1.14 | 0.93 |
| 7661 | -20.89 | 1.24 | 1.33 | 1.58 | 1.14 | 0.93 |
| 7662 | -20.77 | 1.24 | 1.32 | 1.57 | 1.14 | 0.93 |
| 7663 | -20.65 | 1.24 | 1.32 | 1.55 | 1.15 | 0.93 |
| 7664 | -20.54 | 1.23 | 1.31 | 1.51 | 1.14 | 0.94 |
| 7665 | -21.12 | 1.11 | 1.20 | 4.55 | 1.04 | 0.95 |
| 7666 | − | − | − | − | − | − |
| 7667 | − | − | − | − | − | − |
| 7668 | -21.17 | 1.12 | 1.21 | 4.36 | 1.05 | 0.95 |
| 7669 | -21.27 | 1.14 | 1.23 | 3.87 | 1.06 | 0.94 |
| 7670 | -20.82 | 1.19 | 1.27 | 3.20 | 1.09 | 0.93 |
| 7671 | -20.72 | 1.19 | 1.27 | 3.20 | 1.10 | 0.93 |
| 7672 | -20.61 | 1.19 | 1.27 | 3.20 | 1.10 | 0.93 |
| 7673 | -20.50 | 1.19 | 1.27 | 3.21 | 1.10 | 0.93 |
| 7674 | -20.38 | 1.19 | 1.27 | 3.21 | 1.10 | 0.94 |
| 7675 | -20.26 | 1.19 | 1.26 | 3.22 | 1.10 | 0.94 |

[Table 633]

| 7676 | -20.15 | 1.19 | 1.26 | 3.22 | 1.11 | 0.94 |
|---|---|---|---|---|---|---|
| 7677 | -20.03 | 1.19 | 1.26 | 3.22 | 1.11 | 0.94 |
| 7678 | -19.92 | 1.18 | 1.25 | 3.20 | 1.11 | 0.94 |
| 7679 | -19.80 | 1.18 | 1.25 | 3.18 | 1.11 | 0.94 |
| 7680 | -19.70 | 1.18 | 1.24 | 3.13 | 1.11 | 0.94 |
| 7681 | -20.75 | 1.07 | 1.14 | 5.62 | 1.02 | 0.96 |
| 7682 | — | — | — | — | — | — |
| 7683 | — | — | — | — | — | — |
| 7684 | -20.76 | 1.07 | 1.15 | 5.49 | 1.02 | 0.96 |
| 7685 | -20.74 | 1.09 | 1.17 | 5.14 | 1.03 | 0.96 |
| 7686 | -20.04 | 1.13 | 1.20 | 4.79 | 1.06 | 0.94 |
| 7687 | -19.93 | 1.13 | 1.20 | 4.80 | 1.06 | 0.94 |
| 7688 | -19.81 | 1.14 | 1.20 | 4.82 | 1.06 | 0.95 |
| 7689 | -19.69 | 1.14 | 1.20 | 4.83 | 1.07 | 0.95 |
| 7690 | -19.58 | 1.14 | 1.20 | 4.85 | 1.07 | 0.95 |
| 7691 | -19.46 | 1.14 | 1.19 | 4.86 | 1.07 | 0.95 |
| 7692 | -19.34 | 1.13 | 1.19 | 4.86 | 1.07 | 0.95 |
| 7693 | -19.23 | 1.13 | 1.19 | 4.86 | 1.07 | 0.95 |
| 7694 | -19.11 | 1.13 | 1.18 | 4.84 | 1.07 | 0.95 |
| 7695 | -19.01 | 1.13 | 1.18 | 4.80 | 1.07 | 0.95 |
| 7696 | -18.91 | 1.12 | 1.17 | 4.75 | 1.07 | 0.96 |
| 7697 | -20.44 | 1.02 | 1.09 | 6.62 | 0.99 | 0.98 |
| 7698 | — | — | — | — | — | — |
| 7699 | — | — | — | — | — | — |
| 7700 | -20.41 | 1.03 | 1.09 | 6.54 | 0.99 | 0.98 |
| 7701 | -20.28 | 1.04 | 1.11 | 6.35 | 1.00 | 0.97 |
| 7702 | -19.35 | 1.08 | 1.13 | 6.32 | 1.03 | 0.96 |
| 7703 | -19.23 | 1.08 | 1.13 | 6.35 | 1.03 | 0.96 |
| 7704 | -19.10 | 1.08 | 1.13 | 6.38 | 1.03 | 0.96 |
| 7705 | -18.98 | 1.08 | 1.13 | 6.41 | 1.03 | 0.96 |
| 7706 | -18.86 | 1.08 | 1.13 | 6.43 | 1.03 | 0.96 |
| 7707 | -18.74 | 1.08 | 1.13 | 6.45 | 1.03 | 0.96 |
| 7708 | -18.62 | 1.08 | 1.12 | 6.45 | 1.03 | 0.96 |
| 7709 | -18.51 | 1.08 | 1.12 | 6.45 | 1.03 | 0.96 |
| 7710 | -18.41 | 1.08 | 1.11 | 6.43 | 1.03 | 0.96 |
| 7711 | -18.31 | 1.07 | 1.11 | 6.39 | 1.03 | 0.97 |
| 7712 | -18.21 | 1.07 | 1.10 | 6.33 | 1.03 | 0.97 |
| 7713 | -20.19 | 0.97 | 1.03 | 7.54 | 0.96 | 0.99 |
| 7714 | — | — | — | — | — | — |
| 7715 | — | — | — | — | — | — |
| 7716 | -20.13 | 0.98 | 1.04 | 7.51 | 0.96 | 0.99 |
| 7717 | -19.90 | 1.00 | 1.05 | 7.47 | 0.97 | 0.98 |
| 7718 | -18.76 | 1.03 | 1.07 | 7.77 | 0.99 | 0.97 |
| 7719 | -18.64 | 1.03 | 1.07 | 7.82 | 0.99 | 0.97 |
| 7720 | -18.51 | 1.03 | 1.07 | 7.86 | 0.99 | 0.97 |
| 7721 | -18.38 | 1.03 | 1.07 | 7.90 | 1.00 | 0.97 |
| 7722 | -18.26 | 1.03 | 1.07 | 7.93 | 1.00 | 0.97 |
| 7723 | -18.14 | 1.03 | 1.06 | 7.95 | 1.00 | 0.97 |
| 7724 | -18.02 | 1.03 | 1.06 | 7.96 | 1.00 | 0.98 |
| 7725 | -17.91 | 1.02 | 1.06 | 7.95 | 1.00 | 0.98 |

[Table 634]

| 7726 | -17.81 | 1.02 | 1.05 | 7.93 | 1.00 | 0.98 |
|------|--------|------|------|------|------|------|
| 7727 | -17.71 | 1.02 | 1.04 | 7.88 | 1.00 | 0.98 |
| 7728 | -17.63 | 1.01 | 1.04 | 7.82 | 0.99 | 0.98 |
| 7729 | -20.02 | 0.93 | 0.98 | 8.35 | 0.93 | 1.01 |
| 7730 | — | — | — | — | — | — |
| 7731 | — | — | — | — | — | — |
| 7732 | -19.93 | 0.93 | 0.98 | 8.37 | 0.93 | 1.00 |
| 7733 | -19.61 | 0.95 | 1.00 | 8.47 | 0.94 | 1.00 |
| 7734 | -18.31 | 0.98 | 1.01 | 9.10 | 0.96 | 0.99 |
| 7735 | -18.17 | 0.98 | 1.01 | 9.16 | 0.96 | 0.99 |
| 7736 | -18.04 | 0.98 | 1.01 | 9.22 | 0.96 | 0.99 |
| 7737 | -17.91 | 0.98 | 1.01 | 9.27 | 0.96 | 0.99 |
| 7738 | -17.78 | 0.98 | 1.00 | 9.31 | 0.96 | 0.99 |
| 7739 | -17.66 | 0.98 | 1.00 | 9.34 | 0.96 | 0.99 |
| 7740 | -17.55 | 0.97 | 1.00 | 9.35 | 0.96 | 0.99 |
| 7741 | -17.44 | 0.97 | 0.99 | 9.34 | 0.96 | 0.99 |
| 7742 | -17.34 | 0.97 | 0.99 | 9.32 | 0.96 | 0.99 |
| 7743 | -17.25 | 0.97 | 0.98 | 9.27 | 0.96 | 0.99 |
| 7744 | -17.17 | 0.96 | 0.98 | 9.19 | 0.96 | 1.00 |
| 7745 | -19.93 | 0.89 | 0.93 | 9.04 | 0.90 | 1.02 |
| 7746 | — | — | — | — | — | — |
| 7747 | — | — | — | — | — | — |
| 7748 | -19.81 | 0.89 | 0.93 | 9.11 | 0.90 | 1.02 |
| 7749 | -19.42 | 0.90 | 0.94 | 9.35 | 0.91 | 1.01 |
| 7750 | -17.98 | 0.93 | 0.95 | 10.28 | 0.93 | 1.00 |
| 7751 | -17.84 | 0.93 | 0.95 | 10.36 | 0.93 | 1.00 |
| 7752 | -17.70 | 0.93 | 0.95 | 10.44 | 0.93 | 1.00 |
| 7753 | -17.57 | 0.93 | 0.95 | 10.50 | 0.93 | 1.00 |
| 7754 | -17.44 | 0.93 | 0.95 | 10.54 | 0.93 | 1.00 |
| 7755 | -17.32 | 0.93 | 0.94 | 10.58 | 0.93 | 1.01 |
| 7756 | -17.21 | 0.92 | 0.94 | 10.59 | 0.93 | 1.01 |
| 7757 | -17.10 | 0.92 | 0.94 | 10.58 | 0.93 | 1.01 |
| 7758 | -17.01 | 0.92 | 0.93 | 10.55 | 0.93 | 1.01 |
| 7759 | -16.93 | 0.91 | 0.93 | 10.50 | 0.92 | 1.01 |
| 7760 | -16.86 | 0.91 | 0.92 | 10.41 | 0.92 | 1.01 |
| 7761 | -19.94 | 0.84 | 0.88 | 9.59 | 0.86 | 1.03 |
| 7762 | — | — | — | — | — | — |
| 7763 | — | — | — | — | — | — |
| 7764 | -19.79 | 0.85 | 0.88 | 9.71 | 0.87 | 1.03 |
| 7765 | -19.34 | 0.86 | 0.89 | 10.07 | 0.87 | 1.03 |
| 7766 | -17.79 | 0.88 | 0.90 | 11.30 | 0.89 | 1.02 |
| 7767 | -17.64 | 0.88 | 0.90 | 11.40 | 0.89 | 1.02 |
| 7768 | -17.50 | 0.88 | 0.90 | 11.49 | 0.89 | 1.02 |
| 7769 | -17.37 | 0.88 | 0.90 | 11.56 | 0.90 | 1.02 |
| 7770 | -17.24 | 0.88 | 0.89 | 11.61 | 0.90 | 1.02 |
| 7771 | -17.12 | 0.88 | 0.89 | 11.65 | 0.90 | 1.02 |
| 7772 | -17.01 | 0.87 | 0.89 | 11.67 | 0.90 | 1.02 |
| 7773 | -16.91 | 0.87 | 0.88 | 11.66 | 0.89 | 1.03 |
| 7774 | -16.82 | 0.87 | 0.88 | 11.62 | 0.89 | 1.03 |
| 7775 | -16.75 | 0.87 | 0.87 | 11.56 | 0.89 | 1.03 |

[Table 635]

| 7776 | -16.69 | 0.86 | 0.86 | 11.46 | 0.89 | 1.03 |
| 7777 | -20.04 | 0.80 | 0.83 | 9.97 | 0.83 | 1.05 |
| 7778 | – | – | – | – | – | – |
| 7779 | – | – | – | – | – | – |
| 7780 | -19.88 | 0.80 | 0.83 | 10.13 | 0.83 | 1.05 |
| 7781 | -19.38 | 0.81 | 0.84 | 10.62 | 0.84 | 1.04 |
| 7782 | -17.73 | 0.83 | 0.85 | 12.14 | 0.86 | 1.04 |
| 7783 | -17.58 | 0.83 | 0.85 | 12.25 | 0.86 | 1.04 |
| 7784 | -17.44 | 0.83 | 0.85 | 12.35 | 0.86 | 1.04 |
| 7785 | -17.31 | 0.83 | 0.84 | 12.43 | 0.86 | 1.04 |
| 7786 | -17.18 | 0.83 | 0.84 | 12.49 | 0.86 | 1.04 |
| 7787 | -17.07 | 0.83 | 0.84 | 12.53 | 0.86 | 1.04 |
| 7788 | -16.96 | 0.83 | 0.83 | 12.55 | 0.86 | 1.04 |
| 7789 | -16.86 | 0.82 | 0.83 | 12.54 | 0.86 | 1.04 |
| 7790 | -16.78 | 0.82 | 0.82 | 12.50 | 0.86 | 1.04 |
| 7791 | -16.71 | 0.82 | 0.82 | 12.42 | 0.86 | 1.05 |
| 7792 | -16.66 | 0.81 | 0.81 | 12.31 | 0.85 | 1.05 |
| 7793 | -20.26 | 0.76 | 0.78 | 10.18 | 0.80 | 1.06 |
| 7794 | – | – | – | – | – | – |
| 7795 | – | – | – | – | – | – |
| 7796 | -20.08 | 0.76 | 0.79 | 10.38 | 0.80 | 1.06 |
| 7797 | -19.53 | 0.77 | 0.79 | 10.99 | 0.81 | 1.05 |
| 7798 | -17.81 | 0.79 | 0.80 | 12.77 | 0.83 | 1.05 |
| 7799 | -17.66 | 0.79 | 0.80 | 12.90 | 0.83 | 1.05 |
| 7800 | -17.52 | 0.79 | 0.80 | 13.00 | 0.83 | 1.06 |
| 7801 | -17.39 | 0.79 | 0.79 | 13.09 | 0.83 | 1.06 |
| 7802 | -17.26 | 0.78 | 0.79 | 13.16 | 0.83 | 1.06 |
| 7803 | -17.15 | 0.78 | 0.79 | 13.20 | 0.83 | 1.06 |
| 7804 | -17.05 | 0.78 | 0.78 | 13.22 | 0.83 | 1.06 |
| 7805 | -16.96 | 0.78 | 0.78 | 13.20 | 0.83 | 1.06 |
| 7806 | -16.88 | 0.77 | 0.77 | 13.15 | 0.82 | 1.06 |
| 7807 | -16.82 | 0.77 | 0.77 | 13.06 | 0.82 | 1.06 |
| 7808 | -16.78 | 0.77 | 0.76 | 12.94 | 0.82 | 1.06 |
| 7809 | -20.61 | 0.72 | 0.74 | 10.18 | 0.76 | 1.07 |
| 7810 | – | – | – | – | – | – |
| 7811 | – | – | – | – | – | – |
| 7812 | -20.41 | 0.72 | 0.74 | 10.43 | 0.77 | 1.07 |
| 7813 | -19.82 | 0.73 | 0.75 | 11.15 | 0.77 | 1.07 |
| 7814 | -18.03 | 0.74 | 0.75 | 13.17 | 0.79 | 1.07 |
| 7815 | -17.88 | 0.74 | 0.75 | 13.31 | 0.80 | 1.07 |
| 7816 | -17.74 | 0.74 | 0.75 | 13.43 | 0.80 | 1.07 |
| 7817 | -17.61 | 0.74 | 0.75 | 13.52 | 0.80 | 1.07 |
| 7818 | -17.49 | 0.74 | 0.74 | 13.59 | 0.80 | 1.08 |
| 7819 | -17.38 | 0.74 | 0.74 | 13.63 | 0.80 | 1.08 |
| 7820 | -17.28 | 0.74 | 0.74 | 13.64 | 0.79 | 1.08 |
| 7821 | -17.20 | 0.73 | 0.73 | 13.62 | 0.79 | 1.08 |
| 7822 | -17.14 | 0.73 | 0.73 | 13.56 | 0.79 | 1.08 |
| 7823 | -17.09 | 0.73 | 0.72 | 13.46 | 0.79 | 1.08 |
| 7824 | -17.06 | 0.72 | 0.71 | 13.31 | 0.78 | 1.08 |

[Table 636]

| | | | | | |
|---|---|---|---|---|---|
| 7826 | — | — | — | — | — | — |
| 7827 | — | — | — | — | — | — |
| 7828 | -20.88 | 0.68 | 0.69 | 10.26 | 0.73 | 1.08 |
| 7829 | -20.25 | 0.69 | 0.70 | 11.08 | 0.74 | 1.08 |
| 7830 | -18.40 | 0.70 | 0.70 | 13.33 | 0.76 | 1.09 |
| 7831 | -18.25 | 0.70 | 0.70 | 13.47 | 0.76 | 1.09 |
| 7832 | -18.11 | 0.70 | 0.70 | 13.60 | 0.76 | 1.09 |
| 7833 | -17.98 | 0.70 | 0.70 | 13.70 | 0.76 | 1.09 |
| 7834 | -17.87 | 0.70 | 0.70 | 13.76 | 0.76 | 1.09 |
| 7835 | -17.76 | 0.69 | 0.69 | 13.80 | 0.76 | 1.10 |
| 7836 | -17.67 | 0.69 | 0.69 | 13.81 | 0.76 | 1.10 |
| 7837 | -17.60 | 0.69 | 0.69 | 13.77 | 0.76 | 1.10 |
| 7838 | -17.54 | 0.69 | 0.68 | 13.70 | 0.76 | 1.10 |
| 7839 | -17.50 | 0.68 | 0.67 | 13.58 | 0.75 | 1.10 |
| 7840 | -17.49 | 0.68 | 0.67 | 13.41 | 0.75 | 1.10 |
| 7841 | -20.74 | 1.17 | 1.27 | 3.41 | 1.08 | 0.94 |
| 7842 | — | — | — | — | — | — |
| 7843 | -20.84 | 1.18 | 1.28 | 3.17 | 1.09 | 0.94 |
| 7844 | -21.11 | 1.21 | 1.31 | 2.35 | 1.11 | 0.93 |
| 7845 | -20.71 | 1.25 | 1.35 | 1.55 | 1.14 | 0.92 |
| 7846 | -20.60 | 1.25 | 1.35 | 1.55 | 1.15 | 0.92 |
| 7847 | -20.48 | 1.25 | 1.35 | 1.55 | 1.15 | 0.93 |
| 7848 | -20.36 | 1.25 | 1.34 | 1.56 | 1.15 | 0.93 |
| 7849 | -20.23 | 1.25 | 1.34 | 1.57 | 1.15 | 0.93 |
| 7850 | -20.09 | 1.25 | 1.34 | 1.57 | 1.16 | 0.93 |
| 7851 | -19.96 | 1.25 | 1.34 | 1.58 | 1.16 | 0.93 |
| 7852 | -19.82 | 1.25 | 1.33 | 1.58 | 1.16 | 0.93 |
| 7853 | -19.69 | 1.25 | 1.33 | 1.57 | 1.16 | 0.93 |
| 7854 | -19.56 | 1.24 | 1.32 | 1.55 | 1.16 | 0.94 |
| 7855 | -19.43 | 1.24 | 1.31 | 1.51 | 1.16 | 0.94 |
| 7856 | -20.31 | 1.12 | 1.21 | 4.53 | 1.06 | 0.95 |
| 7857 | — | — | — | — | — | — |
| 7858 | -20.37 | 1.13 | 1.22 | 4.34 | 1.06 | 0.95 |
| 7859 | -20.46 | 1.15 | 1.24 | 3.71 | 1.08 | 0.94 |
| 7860 | -19.82 | 1.19 | 1.27 | 3.18 | 1.11 | 0.93 |
| 7861 | -19.70 | 1.20 | 1.27 | 3.19 | 1.11 | 0.93 |
| 7862 | -19.58 | 1.20 | 1.27 | 3.20 | 1.11 | 0.94 |
| 7863 | -19.45 | 1.20 | 1.27 | 3.22 | 1.12 | 0.94 |
| 7864 | -19.32 | 1.20 | 1.27 | 3.23 | 1.12 | 0.94 |
| 7865 | -19.19 | 1.20 | 1.27 | 3.24 | 1.12 | 0.94 |
| 7866 | -19.06 | 1.20 | 1.26 | 3.24 | 1.12 | 0.94 |
| 7867 | -18.93 | 1.19 | 1.26 | 3.24 | 1.12 | 0.94 |
| 7868 | -18.80 | 1.19 | 1.25 | 3.22 | 1.12 | 0.94 |
| 7869 | -18.67 | 1.19 | 1.25 | 3.19 | 1.12 | 0.95 |
| 7870 | -18.56 | 1.18 | 1.24 | 3.14 | 1.12 | 0.95 |
| 7871 | -19.94 | 1.08 | 1.15 | 5.59 | 1.03 | 0.96 |
| 7872 | — | — | — | — | — | — |
| 7873 | -19.95 | 1.08 | 1.16 | 5.45 | 1.03 | 0.96 |
| 7874 | -19.88 | 1.10 | 1.18 | 5.02 | 1.04 | 0.95 |
| 7875 | -19.00 | 1.14 | 1.21 | 4.79 | 1.07 | 0.95 |

[Table 637]

| 7876 | -18.88 | 1.14 | 1.21 | 4.81 | 1.08 | 0.95 |
|------|--------|------|------|------|------|------|
| 7877 | -18.75 | 1.14 | 1.20 | 4.83 | 1.08 | 0.95 |
| 7878 | -18.62 | 1.14 | 1.20 | 4.85 | 1.08 | 0.95 |
| 7879 | -18.48 | 1.14 | 1.20 | 4.87 | 1.08 | 0.95 |
| 7880 | -18.35 | 1.14 | 1.20 | 4.88 | 1.08 | 0.95 |
| 7881 | -18.22 | 1.14 | 1.19 | 4.89 | 1.08 | 0.95 |
| 7882 | -18.10 | 1.14 | 1.19 | 4.88 | 1.08 | 0.95 |
| 7883 | -17.98 | 1.13 | 1.18 | 4.86 | 1.08 | 0.95 |
| 7884 | -17.86 | 1.13 | 1.18 | 4.82 | 1.08 | 0.96 |
| 7885 | -17.75 | 1.13 | 1.17 | 4.76 | 1.08 | 0.96 |
| 7886 | -19.62 | 1.03 | 1.10 | 6.59 | 1.00 | 0.98 |
| 7887 | — | — | — | — | — | — |
| 7888 | -19.59 | 1.03 | 1.10 | 6.50 | 1.00 | 0.98 |
| 7889 | -19.38 | 1.06 | 1.12 | 6.26 | 1.01 | 0.97 |
| 7890 | -18.29 | 1.09 | 1.14 | 6.33 | 1.04 | 0.96 |
| 7891 | -18.16 | 1.09 | 1.14 | 6.37 | 1.04 | 0.96 |
| 7892 | -18.02 | 1.09 | 1.14 | 6.40 | 1.04 | 0.96 |
| 7893 | -17.89 | 1.09 | 1.14 | 6.43 | 1.04 | 0.96 |
| 7894 | -17.76 | 1.09 | 1.13 | 6.45 | 1.04 | 0.96 |
| 7895 | -17.63 | 1.09 | 1.13 | 6.47 | 1.05 | 0.96 |
| 7896 | -17.50 | 1.09 | 1.13 | 6.47 | 1.05 | 0.96 |
| 7897 | -17.38 | 1.08 | 1.12 | 6.46 | 1.05 | 0.97 |
| 7898 | -17.26 | 1.08 | 1.12 | 6.43 | 1.05 | 0.97 |
| 7899 | -17.15 | 1.08 | 1.11 | 6.39 | 1.04 | 0.97 |
| 7900 | -17.05 | 1.07 | 1.10 | 6.32 | 1.04 | 0.97 |
| 7901 | -19.38 | 0.98 | 1.04 | 7.50 | 0.97 | 0.99 |
| 7902 | — | — | — | — | — | — |
| 7903 | -19.31 | 0.99 | 1.05 | 7.46 | 0.97 | 0.99 |
| 7904 | -18.96 | 1.01 | 1.06 | 7.41 | 0.98 | 0.98 |
| 7905 | -17.70 | 1.04 | 1.08 | 7.78 | 1.00 | 0.97 |
| 7906 | -17.56 | 1.04 | 1.08 | 7.82 | 1.01 | 0.97 |
| 7907 | -17.42 | 1.04 | 1.07 | 7.87 | 1.01 | 0.97 |
| 7908 | -17.29 | 1.04 | 1.07 | 7.91 | 1.01 | 0.97 |
| 7909 | -17.15 | 1.04 | 1.07 | 7.93 | 1.01 | 0.97 |
| 7910 | -17.02 | 1.03 | 1.07 | 7.95 | 1.01 | 0.98 |
| 7911 | -16.90 | 1.03 | 1.06 | 7.95 | 1.01 | 0.98 |
| 7912 | -16.78 | 1.03 | 1.06 | 7.94 | 1.01 | 0.98 |
| 7913 | -16.67 | 1.03 | 1.05 | 7.91 | 1.01 | 0.98 |
| 7914 | -16.56 | 1.02 | 1.05 | 7.86 | 1.01 | 0.98 |
| 7915 | -16.47 | 1.02 | 1.04 | 7.78 | 1.00 | 0.98 |
| 7916 | -19.20 | 0.94 | 0.99 | 8.30 | 0.94 | 1.00 |
| 7917 | — | — | — | — | — | — |
| 7918 | -19.10 | 0.94 | 0.99 | 8.31 | 0.94 | 1.00 |
| 7919 | -18.65 | 0.96 | 1.01 | 8.44 | 0.95 | 0.99 |
| 7920 | -17.24 | 0.98 | 1.02 | 9.09 | 0.97 | 0.99 |
| 7921 | -17.10 | 0.99 | 1.02 | 9.15 | 0.97 | 0.99 |
| 7922 | -16.96 | 0.99 | 1.01 | 9.21 | 0.97 | 0.99 |
| 7923 | -16.82 | 0.98 | 1.01 | 9.25 | 0.97 | 0.99 |
| 7924 | -16.69 | 0.98 | 1.01 | 9.29 | 0.97 | 0.99 |
| 7925 | -16.56 | 0.98 | 1.01 | 9.31 | 0.97 | 0.99 |

[Table 638]

| 7926 | -16.44 | 0.98 | 1.00 | 9.31 | 0.97 | 0.99 |
|---|---|---|---|---|---|---|
| 7927 | -16.32 | 0.98 | 1.00 | 9.30 | 0.97 | 0.99 |
| 7928 | -16.21 | 0.97 | 0.99 | 9.26 | 0.97 | 1.00 |
| 7929 | -16.12 | 0.97 | 0.99 | 9.20 | 0.97 | 1.00 |
| 7930 | -16.03 | 0.96 | 0.98 | 9.11 | 0.97 | 1.00 |
| 7931 | -19.11 | 0.89 | 0.94 | 8.98 | 0.90 | 1.02 |
| 7932 | — | — | — | — | — | — |
| 7933 | -18.99 | 0.90 | 0.94 | 9.04 | 0.91 | 1.02 |
| 7934 | -18.44 | 0.91 | 0.95 | 9.34 | 0.92 | 1.01 |
| 7935 | -16.92 | 0.94 | 0.96 | 10.25 | 0.94 | 1.00 |
| 7936 | -16.77 | 0.94 | 0.96 | 10.33 | 0.94 | 1.00 |
| 7937 | -16.63 | 0.93 | 0.96 | 10.39 | 0.94 | 1.00 |
| 7938 | -16.49 | 0.93 | 0.95 | 10.45 | 0.94 | 1.00 |
| 7939 | -16.36 | 0.93 | 0.95 | 10.48 | 0.94 | 1.01 |
| 7940 | -16.23 | 0.93 | 0.95 | 10.51 | 0.94 | 1.01 |
| 7941 | -16.12 | 0.93 | 0.95 | 10.51 | 0.94 | 1.01 |
| 7942 | -16.01 | 0.93 | 0.94 | 10.49 | 0.94 | 1.01 |
| 7943 | -15.91 | 0.92 | 0.94 | 10.45 | 0.94 | 1.01 |
| 7944 | -15.81 | 0.92 | 0.93 | 10.37 | 0.93 | 1.01 |
| 7945 | -15.74 | 0.91 | 0.92 | 10.27 | 0.93 | 1.01 |
| 7946 | -19.12 | 0.85 | 0.89 | 9.52 | 0.87 | 1.03 |
| 7947 | — | — | — | — | — | — |
| 7948 | -18.97 | 0.85 | 0.89 | 9.63 | 0.88 | 1.03 |
| 7949 | -18.35 | 0.87 | 0.90 | 10.08 | 0.89 | 1.02 |
| 7950 | -16.74 | 0.89 | 0.91 | 11.25 | 0.90 | 1.02 |
| 7951 | -16.59 | 0.89 | 0.90 | 11.34 | 0.90 | 1.02 |
| 7952 | -16.45 | 0.89 | 0.90 | 11.41 | 0.91 | 1.02 |
| 7953 | -16.31 | 0.88 | 0.90 | 11.47 | 0.91 | 1.02 |
| 7954 | -16.18 | 0.88 | 0.90 | 11.51 | 0.91 | 1.02 |
| 7955 | -16.06 | 0.88 | 0.89 | 11.53 | 0.91 | 1.02 |
| 7956 | -15.94 | 0.88 | 0.89 | 11.53 | 0.90 | 1.03 |
| 7957 | -15.84 | 0.88 | 0.89 | 11.51 | 0.90 | 1.03 |
| 7958 | -15.74 | 0.87 | 0.88 | 11.46 | 0.90 | 1.03 |
| 7959 | -15.66 | 0.87 | 0.87 | 11.38 | 0.90 | 1.03 |
| 7960 | -15.59 | 0.86 | 0.87 | 11.26 | 0.89 | 1.03 |
| 7961 | -19.22 | 0.81 | 0.84 | 9.90 | 0.84 | 1.04 |
| 7962 | — | — | — | — | — | — |
| 7963 | -19.06 | 0.81 | 0.84 | 10.05 | 0.84 | 1.04 |
| 7964 | -18.37 | 0.82 | 0.85 | 10.66 | 0.85 | 1.04 |
| 7965 | -16.70 | 0.84 | 0.85 | 12.06 | 0.87 | 1.04 |
| 7966 | -16.55 | 0.84 | 0.85 | 12.15 | 0.87 | 1.04 |
| 7967 | -16.40 | 0.84 | 0.85 | 12.24 | 0.87 | 1.04 |
| 7968 | -16.27 | 0.84 | 0.85 | 12.30 | 0.87 | 1.04 |
| 7969 | -16.14 | 0.84 | 0.85 | 12.34 | 0.87 | 1.04 |
| 7970 | -16.02 | 0.83 | 0.84 | 12.37 | 0.87 | 1.04 |
| 7971 | -15.91 | 0.83 | 0.84 | 12.36 | 0.87 | 1.04 |
| 7972 | -15.81 | 0.83 | 0.83 | 12.33 | 0.87 | 1.04 |
| 7973 | -15.73 | 0.82 | 0.83 | 12.27 | 0.87 | 1.05 |
| 7974 | -15.66 | 0.82 | 0.82 | 12.17 | 0.86 | 1.05 |
| 7975 | -15.60 | 0.82 | 0.81 | 12.04 | 0.86 | 1.05 |

[Table 639]

EP 4 442 787 A1

| | | | | | | |
|---|---|---|---|---|---|---|
| 7976 | -19.44 | 0.77 | 0.79 | 10.10 | 0.81 | 1.05 |
| 7977 | — | — | — | — | — | — |
| 7978 | -19.26 | 0.77 | 0.79 | 10.29 | 0.81 | 1.05 |
| 7979 | -18.52 | 0.78 | 0.80 | 11.05 | 0.82 | 1.05 |
| 7980 | -16.79 | 0.79 | 0.80 | 12.66 | 0.84 | 1.05 |
| 7981 | -16.64 | 0.79 | 0.80 | 12.76 | 0.84 | 1.05 |
| 7982 | -16.50 | 0.79 | 0.80 | 12.85 | 0.84 | 1.06 |
| 7983 | -16.37 | 0.79 | 0.80 | 12.92 | 0.84 | 1.06 |
| 7984 | -16.24 | 0.79 | 0.80 | 12.96 | 0.84 | 1.06 |
| 7985 | -16.13 | 0.79 | 0.79 | 12.98 | 0.84 | 1.06 |
| 7986 | -16.03 | 0.79 | 0.79 | 12.97 | 0.84 | 1.06 |
| 7987 | -15.94 | 0.78 | 0.78 | 12.93 | 0.83 | 1.06 |
| 7988 | -15.86 | 0.78 | 0.78 | 12.86 | 0.83 | 1.06 |
| 7989 | -15.80 | 0.77 | 0.77 | 12.74 | 0.83 | 1.06 |
| 7990 | -15.75 | 0.77 | 0.76 | 12.59 | 0.82 | 1.06 |
| 7991 | -19.78 | 0.72 | 0.74 | 10.12 | 0.77 | 1.06 |
| 7992 | — | — | — | — | — | — |
| 7993 | -19.59 | 0.73 | 0.75 | 10.34 | 0.77 | 1.06 |
| 7994 | -18.81 | 0.74 | 0.75 | 11.23 | 0.78 | 1.06 |
| 7995 | -17.03 | 0.75 | 0.76 | 13.03 | 0.80 | 1.07 |
| 7996 | -16.89 | 0.75 | 0.75 | 13.14 | 0.80 | 1.07 |
| 7997 | -16.75 | 0.75 | 0.75 | 13.23 | 0.80 | 1.07 |
| 7998 | -16.62 | 0.75 | 0.75 | 13.30 | 0.80 | 1.07 |
| 7999 | -16.49 | 0.74 | 0.75 | 13.34 | 0.80 | 1.08 |
| 8000 | -16.39 | 0.74 | 0.74 | 13.36 | 0.80 | 1.08 |
| 8001 | -16.29 | 0.74 | 0.74 | 13.34 | 0.80 | 1.08 |
| 8002 | -16.21 | 0.74 | 0.74 | 13.29 | 0.80 | 1.08 |
| 8003 | -16.14 | 0.73 | 0.73 | 13.19 | 0.80 | 1.08 |
| 8004 | -16.09 | 0.73 | 0.72 | 13.06 | 0.79 | 1.08 |
| 8005 | -16.07 | 0.72 | 0.72 | 12.88 | 0.79 | 1.08 |
| 8006 | -20.48 | 1.18 | 1.27 | 3.28 | 1.09 | 0.94 |
| 8007 | — | — | — | — | — | — |
| 8008 | -20.58 | 1.18 | 1.28 | 3.04 | 1.09 | 0.93 |
| 8009 | -20.82 | 1.21 | 1.31 | 2.26 | 1.11 | 0.93 |
| 8010 | -20.32 | 1.25 | 1.35 | 1.54 | 1.15 | 0.93 |
| 8011 | -20.20 | 1.25 | 1.35 | 1.54 | 1.15 | 0.93 |
| 8012 | -20.08 | 1.25 | 1.35 | 1.55 | 1.15 | 0.93 |
| 8013 | -19.95 | 1.26 | 1.35 | 1.56 | 1.16 | 0.93 |
| 8014 | -19.81 | 1.25 | 1.34 | 1.57 | 1.16 | 0.93 |
| 8015 | -19.67 | 1.25 | 1.34 | 1.58 | 1.16 | 0.93 |
| 8016 | -19.53 | 1.25 | 1.34 | 1.59 | 1.16 | 0.93 |
| 8017 | -19.39 | 1.25 | 1.33 | 1.59 | 1.16 | 0.93 |
| 8018 | -19.25 | 1.25 | 1.33 | 1.58 | 1.16 | 0.94 |
| 8019 | -19.11 | 1.24 | 1.32 | 1.55 | 1.16 | 0.94 |
| 8020 | -18.98 | 1.24 | 1.31 | 1.52 | 1.16 | 0.94 |
| 8021 | -20.04 | 1.13 | 1.21 | 4.41 | 1.06 | 0.95 |
| 8022 | — | — | — | — | — | — |
| 8023 | -20.08 | 1.13 | 1.22 | 4.22 | 1.07 | 0.95 |
| 8024 | -20.15 | 1.16 | 1.25 | 3.63 | 1.08 | 0.94 |
| 8025 | -19.42 | 1.20 | 1.28 | 3.18 | 1.11 | 0.94 |

[Table 640]

673

| 8026 | -19.29 | 1.20 | 1.28 | 3.19 | 1.12 | 0.94 |
|------|--------|------|------|------|------|------|
| 8027 | -19.16 | 1.20 | 1.27 | 3.20 | 1.12 | 0.94 |
| 8028 | -19.03 | 1.20 | 1.27 | 3.22 | 1.12 | 0.94 |
| 8029 | -18.89 | 1.20 | 1.27 | 3.23 | 1.12 | 0.94 |
| 8030 | -18.76 | 1.20 | 1.27 | 3.24 | 1.12 | 0.94 |
| 8031 | -18.62 | 1.20 | 1.26 | 3.25 | 1.12 | 0.94 |
| 8032 | -18.48 | 1.19 | 1.26 | 3.24 | 1.13 | 0.94 |
| 8033 | -18.35 | 1.19 | 1.25 | 3.23 | 1.13 | 0.95 |
| 8034 | -18.22 | 1.19 | 1.25 | 3.20 | 1.13 | 0.95 |
| 8035 | -18.10 | 1.18 | 1.24 | 3.15 | 1.12 | 0.95 |
| 8036 | -19.64 | 1.08 | 1.16 | 5.49 | 1.03 | 0.96 |
| 8037 | — | — | — | — | — | — |
| 8038 | -19.64 | 1.09 | 1.16 | 5.36 | 1.04 | 0.96 |
| 8039 | -19.55 | 1.11 | 1.18 | 4.95 | 1.05 | 0.95 |
| 8040 | -18.60 | 1.14 | 1.21 | 4.78 | 1.08 | 0.95 |
| 8041 | -18.46 | 1.14 | 1.21 | 4.81 | 1.08 | 0.95 |
| 8042 | -18.33 | 1.14 | 1.21 | 4.83 | 1.08 | 0.95 |
| 8043 | -18.19 | 1.14 | 1.20 | 4.85 | 1.08 | 0.95 |
| 8044 | -18.05 | 1.14 | 1.20 | 4.87 | 1.09 | 0.95 |
| 8045 | -17.92 | 1.14 | 1.20 | 4.88 | 1.09 | 0.95 |
| 8046 | -17.79 | 1.14 | 1.20 | 4.89 | 1.09 | 0.95 |
| 8047 | -17.65 | 1.14 | 1.19 | 4.88 | 1.09 | 0.95 |
| 8048 | -17.52 | 1.14 | 1.18 | 4.86 | 1.09 | 0.96 |
| 8049 | -17.40 | 1.13 | 1.18 | 4.82 | 1.09 | 0.96 |
| 8050 | -17.29 | 1.13 | 1.17 | 4.76 | 1.08 | 0.96 |
| 8051 | -19.31 | 1.03 | 1.10 | 6.50 | 1.00 | 0.98 |
| 8052 | — | — | — | — | — | — |
| 8053 | -19.27 | 1.04 | 1.10 | 6.42 | 1.01 | 0.97 |
| 8054 | -19.03 | 1.06 | 1.12 | 6.20 | 1.02 | 0.97 |
| 8055 | -17.88 | 1.09 | 1.14 | 6.32 | 1.04 | 0.96 |
| 8056 | -17.74 | 1.09 | 1.14 | 6.36 | 1.04 | 0.96 |
| 8057 | -17.60 | 1.09 | 1.14 | 6.39 | 1.05 | 0.96 |
| 8058 | -17.46 | 1.09 | 1.14 | 6.42 | 1.05 | 0.96 |
| 8059 | -17.33 | 1.09 | 1.13 | 6.44 | 1.05 | 0.96 |
| 8060 | -17.19 | 1.09 | 1.13 | 6.46 | 1.05 | 0.96 |
| 8061 | -17.06 | 1.09 | 1.13 | 6.46 | 1.05 | 0.97 |
| 8062 | -16.93 | 1.08 | 1.12 | 6.45 | 1.05 | 0.97 |
| 8063 | -16.81 | 1.08 | 1.12 | 6.42 | 1.05 | 0.97 |
| 8064 | -16.70 | 1.08 | 1.11 | 6.37 | 1.05 | 0.97 |
| 8065 | -16.59 | 1.07 | 1.10 | 6.30 | 1.05 | 0.97 |
| 8066 | -19.04 | 0.99 | 1.04 | 7.43 | 0.97 | 0.99 |
| 8067 | — | — | — | — | — | — |
| 8068 | -18.97 | 0.99 | 1.05 | 7.39 | 0.97 | 0.99 |
| 8069 | -18.61 | 1.01 | 1.06 | 7.36 | 0.99 | 0.98 |
| 8070 | -17.29 | 1.04 | 1.08 | 7.75 | 1.01 | 0.97 |
| 8071 | -17.15 | 1.04 | 1.08 | 7.80 | 1.01 | 0.97 |
| 8072 | -17.01 | 1.04 | 1.08 | 7.85 | 1.01 | 0.97 |
| 8073 | -16.87 | 1.04 | 1.07 | 7.88 | 1.01 | 0.97 |
| 8074 | -16.73 | 1.04 | 1.07 | 7.91 | 1.01 | 0.98 |
| 8075 | -16.59 | 1.04 | 1.07 | 7.93 | 1.01 | 0.98 |

[Table 641]

| | | | | | | |
|------|--------|------|------|-------|------|------|
| 8076 | -16.47 | 1.03 | 1.06 | 7.93 | 1.01 | 0.98 |
| 8077 | -16.34 | 1.03 | 1.06 | 7.91 | 1.01 | 0.98 |
| 8078 | -16.23 | 1.03 | 1.05 | 7.88 | 1.01 | 0.98 |
| 8079 | -16.12 | 1.02 | 1.05 | 7.82 | 1.01 | 0.98 |
| 8080 | -16.02 | 1.02 | 1.04 | 7.74 | 1.01 | 0.99 |
| 8081 | -18.86 | 0.94 | 0.99 | 8.24 | 0.94 | 1.00 |
| 8082 | – | – | – | – | – | – |
| 8083 | -18.76 | 0.95 | 1.00 | 8.26 | 0.94 | 1.00 |
| 8084 | -18.28 | 0.96 | 1.01 | 8.40 | 0.95 | 0.99 |
| 8085 | -16.84 | 0.99 | 1.02 | 9.06 | 0.97 | 0.99 |
| 8086 | -16.69 | 0.99 | 1.02 | 9.12 | 0.98 | 0.99 |
| 8087 | -16.54 | 0.99 | 1.02 | 9.17 | 0.98 | 0.99 |
| 8088 | -16.40 | 0.99 | 1.01 | 9.22 | 0.98 | 0.99 |
| 8089 | -16.27 | 0.98 | 1.01 | 9.25 | 0.98 | 0.99 |
| 8090 | -16.14 | 0.98 | 1.01 | 9.26 | 0.98 | 0.99 |
| 8091 | -16.01 | 0.98 | 1.00 | 9.26 | 0.98 | 0.99 |
| 8092 | -15.89 | 0.98 | 1.00 | 9.25 | 0.98 | 1.00 |
| 8093 | -15.78 | 0.97 | 0.99 | 9.20 | 0.98 | 1.00 |
| 8094 | -15.68 | 0.97 | 0.99 | 9.14 | 0.97 | 1.00 |
| 8095 | -15.59 | 0.97 | 0.98 | 9.04 | 0.97 | 1.00 |
| 8096 | -18.76 | 0.90 | 0.94 | 8.94 | 0.91 | 1.02 |
| 8097 | – | – | – | – | – | – |
| 8098 | -18.63 | 0.90 | 0.94 | 9.00 | 0.91 | 1.01 |
| 8099 | -18.07 | 0.92 | 0.95 | 9.30 | 0.92 | 1.01 |
| 8100 | -16.52 | 0.94 | 0.96 | 10.21 | 0.94 | 1.00 |
| 8101 | -16.37 | 0.94 | 0.96 | 10.28 | 0.94 | 1.00 |
| 8102 | -16.23 | 0.94 | 0.96 | 10.34 | 0.94 | 1.00 |
| 8103 | -16.08 | 0.94 | 0.96 | 10.39 | 0.94 | 1.01 |
| 8104 | -15.95 | 0.93 | 0.95 | 10.43 | 0.94 | 1.01 |
| 8105 | -15.82 | 0.93 | 0.95 | 10.44 | 0.94 | 1.01 |
| 8106 | -15.70 | 0.93 | 0.95 | 10.44 | 0.94 | 1.01 |
| 8107 | -15.59 | 0.93 | 0.94 | 10.42 | 0.94 | 1.01 |
| 8108 | -15.49 | 0.92 | 0.94 | 10.37 | 0.94 | 1.01 |
| 8109 | -15.39 | 0.92 | 0.93 | 10.29 | 0.94 | 1.01 |
| 8110 | -15.31 | 0.91 | 0.92 | 10.18 | 0.93 | 1.02 |
| 8111 | -18.75 | 0.85 | 0.89 | 9.49 | 0.88 | 1.03 |
| 8112 | – | – | – | – | – | – |
| 8113 | -18.61 | 0.86 | 0.89 | 9.60 | 0.88 | 1.03 |
| 8114 | -17.97 | 0.87 | 0.90 | 10.05 | 0.89 | 1.02 |
| 8115 | -16.34 | 0.89 | 0.91 | 11.19 | 0.91 | 1.02 |
| 8116 | -16.19 | 0.89 | 0.91 | 11.27 | 0.91 | 1.02 |
| 8117 | -16.05 | 0.89 | 0.90 | 11.34 | 0.91 | 1.02 |
| 8118 | -15.91 | 0.89 | 0.90 | 11.39 | 0.91 | 1.02 |
| 8119 | -15.78 | 0.88 | 0.90 | 11.43 | 0.91 | 1.02 |
| 8120 | -15.65 | 0.88 | 0.89 | 11.45 | 0.91 | 1.03 |
| 8121 | -15.54 | 0.88 | 0.89 | 11.44 | 0.91 | 1.03 |
| 8122 | -15.43 | 0.88 | 0.89 | 11.41 | 0.91 | 1.03 |
| 8123 | -15.33 | 0.87 | 0.88 | 11.35 | 0.90 | 1.03 |
| 8124 | -15.25 | 0.87 | 0.87 | 11.26 | 0.90 | 1.03 |
| 8125 | -15.18 | 0.86 | 0.87 | 11.13 | 0.90 | 1.03 |

[Table 642]

| 8126 | -18.85 | 0.81 | 0.84 | 9.89 | 0.84 | 1.04 |
|------|--------|------|------|------|------|------|
| 8127 | — | — | — | — | — | — |
| 8128 | -18.69 | 0.82 | 0.84 | 10.03 | 0.85 | 1.04 |
| 8129 | -18.00 | 0.83 | 0.85 | 10.62 | 0.86 | 1.03 |
| 8130 | -16.31 | 0.84 | 0.85 | 11.98 | 0.87 | 1.04 |
| 8131 | -16.16 | 0.84 | 0.85 | 12.07 | 0.87 | 1.04 |
| 8132 | -16.01 | 0.84 | 0.85 | 12.14 | 0.87 | 1.04 |
| 8133 | -15.88 | 0.84 | 0.85 | 12.20 | 0.87 | 1.04 |
| 8134 | -15.75 | 0.84 | 0.85 | 12.24 | 0.87 | 1.04 |
| 8135 | -15.63 | 0.83 | 0.84 | 12.25 | 0.87 | 1.04 |
| 8136 | -15.52 | 0.83 | 0.84 | 12.24 | 0.87 | 1.04 |
| 8137 | -15.42 | 0.83 | 0.83 | 12.20 | 0.87 | 1.05 |
| 8138 | -15.33 | 0.83 | 0.83 | 12.13 | 0.87 | 1.05 |
| 8139 | -15.26 | 0.82 | 0.82 | 12.02 | 0.87 | 1.05 |
| 8140 | -15.20 | 0.82 | 0.81 | 11.88 | 0.86 | 1.05 |
| 8141 | -19.07 | 0.77 | 0.79 | 10.10 | 0.81 | 1.05 |
| 8142 | — | — | — | — | — | — |
| 8143 | -18.89 | 0.77 | 0.80 | 10.28 | 0.81 | 1.05 |
| 8144 | -18.15 | 0.78 | 0.80 | 11.02 | 0.82 | 1.05 |
| 8145 | -16.41 | 0.80 | 0.81 | 12.56 | 0.84 | 1.05 |
| 8146 | -16.26 | 0.79 | 0.80 | 12.66 | 0.84 | 1.05 |
| 8147 | -16.12 | 0.79 | 0.80 | 12.74 | 0.84 | 1.06 |
| 8148 | -15.99 | 0.79 | 0.80 | 12.80 | 0.84 | 1.06 |
| 8149 | -15.86 | 0.79 | 0.80 | 12.83 | 0.84 | 1.06 |
| 8150 | -15.75 | 0.79 | 0.79 | 12.84 | 0.84 | 1.06 |
| 8151 | -15.65 | 0.79 | 0.79 | 12.82 | 0.84 | 1.06 |
| 8152 | -15.56 | 0.78 | 0.78 | 12.77 | 0.84 | 1.06 |
| 8153 | -15.48 | 0.78 | 0.78 | 12.68 | 0.83 | 1.06 |
| 8154 | -15.42 | 0.77 | 0.77 | 12.56 | 0.83 | 1.06 |
| 8155 | -15.37 | 0.77 | 0.76 | 12.40 | 0.82 | 1.06 |
| 8156 | -23.33 | 1.12 | 1.22 | 3.95 | 1.04 | 0.95 |
| 8157 | — | — | — | — | — | — |
| 8158 | -23.43 | 1.12 | 1.23 | 3.72 | 1.04 | 0.95 |
| 8159 | -23.70 | 1.15 | 1.25 | 3.06 | 1.06 | 0.94 |
| 8160 | -23.81 | 1.21 | 1.32 | 1.92 | 1.10 | 0.93 |
| 8161 | -23.74 | 1.21 | 1.32 | 1.90 | 1.10 | 0.93 |
| 8162 | -23.67 | 1.22 | 1.32 | 1.89 | 1.10 | 0.93 |
| 8163 | -23.59 | 1.22 | 1.32 | 1.89 | 1.11 | 0.93 |
| 8164 | -23.50 | 1.22 | 1.32 | 1.90 | 1.11 | 0.93 |
| 8165 | -23.41 | 1.22 | 1.32 | 1.91 | 1.11 | 0.93 |
| 8166 | -23.31 | 1.22 | 1.32 | 1.92 | 1.11 | 0.93 |
| 8167 | -23.21 | 1.22 | 1.32 | 1.93 | 1.12 | 0.93 |
| 8168 | -23.11 | 1.22 | 1.31 | 1.94 | 1.12 | 0.93 |
| 8169 | -23.01 | 1.22 | 1.31 | 1.94 | 1.12 | 0.94 |
| 8170 | -22.92 | 1.22 | 1.30 | 1.91 | 1.12 | 0.94 |
| 8171 | -23.03 | 1.07 | 1.16 | 4.93 | 1.01 | 0.97 |
| 8172 | — | — | — | — | — | — |
| 8173 | -23.10 | 1.08 | 1.17 | 4.74 | 1.02 | 0.96 |
| 8174 | -23.25 | 1.10 | 1.19 | 4.23 | 1.03 | 0.95 |
| 8175 | -23.12 | 1.16 | 1.25 | 3.39 | 1.07 | 0.94 |

[Table 643]

| 8176 | -23.05 | 1.16 | 1.25 | 3.38 | 1.07 | 0.94 |
|------|--------|------|------|------|------|------|
| 8177 | -22.97 | 1.17 | 1.25 | 3.38 | 1.07 | 0.94 |
| 8178 | -22.88 | 1.17 | 1.25 | 3.39 | 1.07 | 0.94 |
| 8179 | -22.79 | 1.17 | 1.25 | 3.40 | 1.08 | 0.94 |
| 8180 | -22.70 | 1.17 | 1.25 | 3.41 | 1.08 | 0.94 |
| 8181 | -22.60 | 1.17 | 1.25 | 3.42 | 1.08 | 0.94 |
| 8182 | -22.51 | 1.17 | 1.25 | 3.43 | 1.08 | 0.94 |
| 8183 | -22.42 | 1.17 | 1.25 | 3.43 | 1.08 | 0.94 |
| 8184 | -22.33 | 1.17 | 1.24 | 3.42 | 1.08 | 0.95 |
| 8185 | -22.25 | 1.16 | 1.24 | 3.39 | 1.08 | 0.95 |
| 8186 | -22.78 | 1.02 | 1.11 | 5.86 | 0.98 | 0.98 |
| 8187 | — | — | — | — | — | — |
| 8188 | -22.81 | 1.03 | 1.11 | 5.72 | 0.99 | 0.98 |
| 8189 | -22.85 | 1.05 | 1.14 | 5.36 | 1.00 | 0.97 |
| 8190 | -22.46 | 1.11 | 1.18 | 4.86 | 1.03 | 0.95 |
| 8191 | -22.38 | 1.11 | 1.19 | 4.87 | 1.04 | 0.95 |
| 8192 | -22.29 | 1.11 | 1.19 | 4.88 | 1.04 | 0.95 |
| 8193 | -22.20 | 1.12 | 1.19 | 4.90 | 1.04 | 0.95 |
| 8194 | -22.11 | 1.12 | 1.19 | 4.92 | 1.04 | 0.95 |
| 8195 | -22.01 | 1.12 | 1.19 | 4.94 | 1.05 | 0.95 |
| 8196 | -21.92 | 1.12 | 1.19 | 4.95 | 1.05 | 0.95 |
| 8197 | -21.82 | 1.12 | 1.18 | 4.96 | 1.05 | 0.95 |
| 8198 | -21.73 | 1.12 | 1.18 | 4.96 | 1.05 | 0.96 |
| 8199 | -21.65 | 1.11 | 1.18 | 4.95 | 1.05 | 0.96 |
| 8200 | -21.58 | 1.11 | 1.17 | 4.91 | 1.05 | 0.96 |
| 8201 | -22.58 | 0.98 | 1.05 | 6.71 | 0.96 | 0.99 |
| 8202 | — | — | — | — | — | — |
| 8203 | -22.56 | 0.99 | 1.06 | 6.64 | 0.96 | 0.99 |
| 8204 | -22.50 | 1.01 | 1.08 | 6.44 | 0.97 | 0.98 |
| 8205 | -21.86 | 1.06 | 1.12 | 6.31 | 1.00 | 0.96 |
| 8206 | -21.76 | 1.06 | 1.12 | 6.34 | 1.00 | 0.96 |
| 8207 | -21.67 | 1.06 | 1.12 | 6.37 | 1.01 | 0.96 |
| 8208 | -21.57 | 1.06 | 1.12 | 6.40 | 1.01 | 0.96 |
| 8209 | -21.47 | 1.07 | 1.12 | 6.43 | 1.01 | 0.96 |
| 8210 | -21.37 | 1.07 | 1.12 | 6.46 | 1.01 | 0.96 |
| 8211 | -21.27 | 1.07 | 1.12 | 6.48 | 1.01 | 0.97 |
| 8212 | -21.18 | 1.07 | 1.12 | 6.49 | 1.01 | 0.97 |
| 8213 | -21.09 | 1.06 | 1.11 | 6.49 | 1.02 | 0.97 |
| 8214 | -21.01 | 1.06 | 1.11 | 6.47 | 1.02 | 0.97 |
| 8215 | -20.95 | 1.06 | 1.10 | 6.43 | 1.01 | 0.97 |
| 8216 | -22.43 | 0.94 | 1.00 | 7.49 | 0.93 | 1.01 |
| 8217 | — | — | — | — | — | — |
| 8218 | -22.38 | 0.94 | 1.01 | 7.47 | 0.93 | 1.01 |
| 8219 | -22.21 | 0.96 | 1.02 | 7.43 | 0.94 | 1.00 |
| 8220 | -21.33 | 1.01 | 1.06 | 7.70 | 0.97 | 0.98 |
| 8221 | -21.22 | 1.01 | 1.06 | 7.75 | 0.97 | 0.98 |
| 8222 | -21.11 | 1.01 | 1.06 | 7.81 | 0.97 | 0.98 |
| 8223 | -21.00 | 1.01 | 1.06 | 7.86 | 0.98 | 0.98 |
| 8224 | -20.90 | 1.01 | 1.06 | 7.90 | 0.98 | 0.98 |
| 8225 | -20.79 | 1.02 | 1.06 | 7.94 | 0.98 | 0.98 |

[Table 644]

| 8226 | -20.69 | 1.01 | 1.06 | 7.97 | 0.98 | 0.98 |
| 8227 | -20.60 | 1.01 | 1.06 | 7.99 | 0.98 | 0.98 |
| 8228 | -20.51 | 1.01 | 1.05 | 7.99 | 0.98 | 0.98 |
| 8229 | -20.44 | 1.01 | 1.05 | 7.97 | 0.98 | 0.98 |
| 8230 | -20.37 | 1.01 | 1.04 | 7.92 | 0.98 | 0.98 |
| 8231 | -22.34 | 0.89 | 0.95 | 8.17 | 0.90 | 1.02 |
| 8232 | — | — | — | — | — | — |
| 8233 | -22.26 | 0.90 | 0.96 | 8.20 | 0.90 | 1.02 |
| 8234 | -22.00 | 0.92 | 0.97 | 8.33 | 0.91 | 1.01 |
| 8235 | -20.89 | 0.96 | 1.00 | 9.01 | 0.94 | 0.99 |
| 8236 | -20.77 | 0.96 | 1.00 | 9.09 | 0.94 | 0.99 |
| 8237 | -20.65 | 0.96 | 1.00 | 9.16 | 0.94 | 0.99 |
| 8238 | -20.53 | 0.96 | 1.00 | 9.23 | 0.94 | 0.99 |
| 8239 | -20.42 | 0.96 | 1.00 | 9.30 | 0.95 | 0.99 |
| 8240 | -20.31 | 0.96 | 1.00 | 9.35 | 0.95 | 0.99 |
| 8241 | -20.21 | 0.96 | 1.00 | 9.39 | 0.95 | 0.99 |
| 8242 | -20.11 | 0.96 | 0.99 | 9.41 | 0.95 | 1.00 |
| 8243 | -20.02 | 0.96 | 0.99 | 9.42 | 0.95 | 1.00 |
| 8244 | -19.95 | 0.96 | 0.99 | 9.40 | 0.95 | 1.00 |
| 8245 | -19.89 | 0.96 | 0.98 | 9.35 | 0.94 | 1.00 |
| 8246 | -22.32 | 0.85 | 0.90 | 8.72 | 0.87 | 1.04 |
| 8247 | — | — | — | — | — | — |
| 8248 | -22.21 | 0.86 | 0.91 | 8.82 | 0.87 | 1.04 |
| 8249 | -21.87 | 0.87 | 0.92 | 9.11 | 0.88 | 1.03 |
| 8250 | -20.56 | 0.91 | 0.94 | 10.20 | 0.91 | 1.01 |
| 8251 | -20.42 | 0.91 | 0.94 | 10.30 | 0.91 | 1.01 |
| 8252 | -20.29 | 0.91 | 0.94 | 10.40 | 0.91 | 1.01 |
| 8253 | -20.17 | 0.92 | 0.94 | 10.49 | 0.91 | 1.01 |
| 8254 | -20.05 | 0.92 | 0.94 | 10.57 | 0.91 | 1.01 |
| 8255 | -19.93 | 0.92 | 0.94 | 10.64 | 0.91 | 1.01 |
| 8256 | -19.83 | 0.92 | 0.94 | 10.69 | 0.92 | 1.01 |
| 8257 | -19.73 | 0.91 | 0.94 | 10.73 | 0.92 | 1.01 |
| 8258 | -19.64 | 0.91 | 0.93 | 10.74 | 0.91 | 1.01 |
| 8259 | -19.57 | 0.91 | 0.93 | 10.72 | 0.91 | 1.01 |
| 8260 | -19.52 | 0.91 | 0.92 | 10.66 | 0.91 | 1.02 |
| 8261 | -22.38 | 0.81 | 0.85 | 9.14 | 0.84 | 1.05 |
| 8262 | — | — | — | — | — | — |
| 8263 | -22.25 | 0.82 | 0.86 | 9.29 | 0.84 | 1.05 |
| 8264 | -21.82 | 0.83 | 0.87 | 9.74 | 0.85 | 1.04 |
| 8265 | -20.33 | 0.86 | 0.89 | 11.25 | 0.88 | 1.03 |
| 8266 | -20.19 | 0.87 | 0.89 | 11.38 | 0.88 | 1.03 |
| 8267 | -20.05 | 0.87 | 0.89 | 11.51 | 0.88 | 1.03 |
| 8268 | -19.92 | 0.87 | 0.89 | 11.62 | 0.88 | 1.03 |
| 8269 | -19.80 | 0.87 | 0.89 | 11.72 | 0.88 | 1.03 |
| 8270 | -19.68 | 0.87 | 0.89 | 11.80 | 0.88 | 1.03 |
| 8271 | -19.57 | 0.87 | 0.89 | 11.87 | 0.88 | 1.03 |
| 8272 | -19.47 | 0.87 | 0.88 | 11.91 | 0.88 | 1.03 |
| 8273 | -19.38 | 0.86 | 0.88 | 11.92 | 0.88 | 1.03 |
| 8274 | -19.31 | 0.86 | 0.87 | 11.91 | 0.88 | 1.03 |
| 8275 | -19.26 | 0.86 | 0.87 | 11.85 | 0.88 | 1.03 |

[Table 645]

| | | | | | | |
|---|---|---|---|---|---|---|
| 8276 | -22.54 | 0.77 | 0.81 | 9.40 | 0.81 | 1.07 |
| 8277 | – | – | – | – | – | – |
| 8278 | -22.38 | 0.77 | 0.81 | 9.60 | 0.81 | 1.06 |
| 8279 | -21.88 | 0.79 | 0.82 | 10.21 | 0.82 | 1.06 |
| 8280 | -20.24 | 0.82 | 0.84 | 12.13 | 0.85 | 1.05 |
| 8281 | -20.08 | 0.82 | 0.84 | 12.30 | 0.85 | 1.05 |
| 8282 | -19.94 | 0.82 | 0.84 | 12.44 | 0.85 | 1.05 |
| 8283 | -19.80 | 0.82 | 0.84 | 12.58 | 0.85 | 1.05 |
| 8284 | -19.67 | 0.82 | 0.84 | 12.70 | 0.85 | 1.05 |
| 8285 | -19.55 | 0.82 | 0.84 | 12.80 | 0.85 | 1.05 |
| 8286 | -19.44 | 0.82 | 0.83 | 12.87 | 0.85 | 1.05 |
| 8287 | -19.34 | 0.82 | 0.83 | 12.92 | 0.85 | 1.05 |
| 8288 | -19.25 | 0.82 | 0.83 | 12.95 | 0.85 | 1.05 |
| 8289 | -19.19 | 0.81 | 0.82 | 12.93 | 0.85 | 1.05 |
| 8290 | -19.14 | 0.81 | 0.82 | 12.87 | 0.85 | 1.05 |
| 8291 | -22.80 | 0.73 | 0.76 | 9.47 | 0.78 | 1.08 |
| 8292 | – | – | – | – | – | – |
| 8293 | -22.62 | 0.73 | 0.76 | 9.73 | 0.78 | 1.08 |
| 8294 | -22.05 | 0.75 | 0.77 | 10.50 | 0.79 | 1.07 |
| 8295 | -20.26 | 0.77 | 0.79 | 12.83 | 0.82 | 1.06 |
| 8296 | -20.10 | 0.78 | 0.79 | 13.01 | 0.82 | 1.07 |
| 8297 | -19.95 | 0.78 | 0.79 | 13.19 | 0.82 | 1.07 |
| 8298 | -19.81 | 0.78 | 0.79 | 13.34 | 0.82 | 1.07 |
| 8299 | -19.67 | 0.78 | 0.79 | 13.48 | 0.82 | 1.07 |
| 8300 | -19.55 | 0.78 | 0.79 | 13.60 | 0.82 | 1.07 |
| 8301 | -19.44 | 0.78 | 0.79 | 13.69 | 0.82 | 1.07 |
| 8302 | -19.34 | 0.77 | 0.78 | 13.75 | 0.82 | 1.07 |
| 8303 | -19.25 | 0.77 | 0.78 | 13.77 | 0.82 | 1.07 |
| 8304 | -19.19 | 0.77 | 0.77 | 13.76 | 0.82 | 1.07 |
| 8305 | -19.15 | 0.76 | 0.77 | 13.70 | 0.81 | 1.07 |
| 8306 | -23.19 | 0.69 | 0.71 | 9.34 | 0.74 | 1.09 |
| 8307 | – | – | – | – | – | – |
| 8308 | -22.98 | 0.69 | 0.72 | 9.66 | 0.74 | 1.09 |
| 8309 | -22.35 | 0.70 | 0.73 | 10.57 | 0.76 | 1.09 |
| 8310 | -20.42 | 0.73 | 0.74 | 13.30 | 0.78 | 1.08 |
| 8311 | -20.25 | 0.73 | 0.74 | 13.51 | 0.79 | 1.09 |
| 8312 | -20.10 | 0.73 | 0.74 | 13.71 | 0.79 | 1.09 |
| 8313 | -19.95 | 0.73 | 0.74 | 13.89 | 0.79 | 1.09 |
| 8314 | -19.81 | 0.73 | 0.74 | 14.05 | 0.79 | 1.09 |
| 8315 | -19.68 | 0.73 | 0.74 | 14.18 | 0.79 | 1.09 |
| 8316 | -19.57 | 0.73 | 0.74 | 14.28 | 0.79 | 1.09 |
| 8317 | -19.47 | 0.73 | 0.74 | 14.35 | 0.79 | 1.09 |
| 8318 | -19.39 | 0.73 | 0.73 | 14.38 | 0.79 | 1.09 |
| 8319 | -19.33 | 0.72 | 0.73 | 14.36 | 0.79 | 1.10 |
| 8320 | -19.30 | 0.72 | 0.72 | 14.29 | 0.78 | 1.10 |
| 8321 | -23.71 | 0.65 | 0.67 | 8.99 | 0.70 | 1.10 |
| 8322 | – | – | – | – | – | – |
| 8323 | -23.48 | 0.65 | 0.67 | 9.35 | 0.71 | 1.10 |
| 8324 | -22.78 | 0.66 | 0.68 | 10.42 | 0.72 | 1.10 |
| 8325 | -20.72 | 0.69 | 0.70 | 13.52 | 0.75 | 1.10 |

[Table 646]

| 8326 | -20.54 | 0.69 | 0.70 | 13.77 | 0.75 | 1.11 |
|------|--------|------|------|-------|------|------|
| 8327 | -20.38 | 0.69 | 0.70 | 13.99 | 0.76 | 1.11 |
| 8328 | -20.23 | 0.69 | 0.70 | 14.19 | 0.76 | 1.11 |
| 8329 | -20.08 | 0.69 | 0.70 | 14.36 | 0.76 | 1.11 |
| 8330 | -19.95 | 0.69 | 0.70 | 14.51 | 0.76 | 1.11 |
| 8331 | -19.84 | 0.69 | 0.69 | 14.62 | 0.76 | 1.11 |
| 8332 | -19.74 | 0.69 | 0.69 | 14.69 | 0.76 | 1.12 |
| 8333 | -19.67 | 0.68 | 0.69 | 14.73 | 0.76 | 1.12 |
| 8334 | -19.61 | 0.68 | 0.68 | 14.71 | 0.76 | 1.12 |
| 8335 | -19.59 | 0.68 | 0.68 | 14.63 | 0.75 | 1.12 |
| 8336 | -24.40 | 0.61 | 0.62 | 8.39 | 0.67 | 1.11 |
| 8337 | — | — | — | — | — | — |
| 8338 | -24.14 | 0.61 | 0.63 | 8.80 | 0.67 | 1.11 |
| 8339 | -23.38 | 0.62 | 0.64 | 10.00 | 0.68 | 1.11 |
| 8340 | -21.16 | 0.65 | 0.66 | 13.47 | 0.72 | 1.12 |
| 8341 | -20.98 | 0.65 | 0.66 | 13.74 | 0.72 | 1.13 |
| 8342 | -20.81 | 0.65 | 0.66 | 13.99 | 0.72 | 1.13 |
| 8343 | -20.65 | 0.65 | 0.65 | 14.20 | 0.73 | 1.13 |
| 8344 | -20.51 | 0.65 | 0.65 | 14.39 | 0.73 | 1.13 |
| 8345 | -20.37 | 0.65 | 0.65 | 14.55 | 0.73 | 1.13 |
| 8346 | -20.26 | 0.65 | 0.65 | 14.67 | 0.73 | 1.14 |
| 8347 | -20.16 | 0.65 | 0.65 | 14.75 | 0.73 | 1.14 |
| 8348 | -20.09 | 0.64 | 0.64 | 14.78 | 0.73 | 1.14 |
| 8349 | -20.04 | 0.64 | 0.64 | 14.76 | 0.72 | 1.14 |
| 8350 | -20.03 | 0.64 | 0.63 | 14.67 | 0.72 | 1.14 |
| 8351 | -25.28 | 0.57 | 0.58 | 7.53 | 0.62 | 1.11 |
| 8352 | — | — | — | — | — | — |
| 8353 | -25.00 | 0.57 | 0.58 | 7.98 | 0.63 | 1.11 |
| 8354 | -24.16 | 0.58 | 0.59 | 9.31 | 0.64 | 1.12 |
| 8355 | -21.77 | 0.61 | 0.61 | 13.11 | 0.69 | 1.14 |
| 8356 | -21.58 | 0.61 | 0.61 | 13.40 | 0.69 | 1.14 |
| 8357 | -21.40 | 0.61 | 0.61 | 13.67 | 0.69 | 1.15 |
| 8358 | -21.24 | 0.61 | 0.61 | 13.90 | 0.69 | 1.15 |
| 8359 | -21.09 | 0.61 | 0.61 | 14.11 | 0.69 | 1.15 |
| 8360 | -20.95 | 0.61 | 0.61 | 14.27 | 0.69 | 1.15 |
| 8361 | -20.83 | 0.61 | 0.61 | 14.40 | 0.70 | 1.16 |
| 8362 | -20.74 | 0.60 | 0.60 | 14.48 | 0.69 | 1.16 |
| 8363 | -20.67 | 0.60 | 0.60 | 14.51 | 0.69 | 1.16 |
| 8364 | -20.63 | 0.60 | 0.60 | 14.48 | 0.69 | 1.16 |
| 8365 | -20.63 | 0.59 | 0.59 | 14.38 | 0.69 | 1.16 |
| 8366 | -22.24 | 1.14 | 1.25 | 4.89 | 1.07 | 0.96 |
| 8367 | — | — | — | — | — | — |
| 8368 | — | — | — | — | — | — |
| 8369 | -22.35 | 1.15 | 1.26 | 4.64 | 1.08 | 0.96 |
| 8370 | -22.75 | 1.19 | 1.30 | 3.71 | 1.10 | 0.95 |
| 8371 | -22.86 | 1.25 | 1.37 | 2.51 | 1.14 | 0.93 |
| 8372 | -22.80 | 1.26 | 1.37 | 2.49 | 1.14 | 0.93 |
| 8373 | -22.73 | 1.26 | 1.37 | 2.48 | 1.15 | 0.93 |
| 8374 | -22.64 | 1.26 | 1.38 | 2.48 | 1.15 | 0.93 |
| 8375 | -22.55 | 1.26 | 1.38 | 2.49 | 1.15 | 0.93 |

[Table 647]

| 8376 | -22.45 | 1.27 | 1.38 | 2.50 | 1.16 | 0.93 |
|------|--------|------|------|------|------|------|
| 8377 | -22.34 | 1.27 | 1.37 | 2.52 | 1.16 | 0.93 |
| 8378 | -22.24 | 1.27 | 1.37 | 2.53 | 1.16 | 0.93 |
| 8379 | -22.13 | 1.27 | 1.37 | 2.54 | 1.16 | 0.94 |
| 8380 | -22.03 | 1.26 | 1.37 | 2.54 | 1.16 | 0.94 |
| 8381 | -21.93 | 1.26 | 1.36 | 2.52 | 1.17 | 0.94 |
| 8382 | -21.95 | 1.10 | 1.20 | 5.86 | 1.05 | 0.97 |
| 8383 | — | — | — | — | — | — |
| 8384 | — | — | — | — | — | — |
| 8385 | -22.02 | 1.11 | 1.21 | 5.66 | 1.05 | 0.97 |
| 8386 | -22.25 | 1.14 | 1.24 | 4.93 | 1.07 | 0.96 |
| 8387 | -22.12 | 1.20 | 1.30 | 4.04 | 1.11 | 0.94 |
| 8388 | -22.05 | 1.20 | 1.30 | 4.03 | 1.11 | 0.94 |
| 8389 | -21.97 | 1.21 | 1.30 | 4.02 | 1.12 | 0.94 |
| 8390 | -21.87 | 1.21 | 1.31 | 4.03 | 1.12 | 0.94 |
| 8391 | -21.78 | 1.21 | 1.31 | 4.05 | 1.12 | 0.94 |
| 8392 | -21.68 | 1.21 | 1.31 | 4.06 | 1.12 | 0.94 |
| 8393 | -21.58 | 1.21 | 1.30 | 4.08 | 1.13 | 0.94 |
| 8394 | -21.48 | 1.21 | 1.30 | 4.09 | 1.13 | 0.95 |
| 8395 | -21.38 | 1.21 | 1.30 | 4.10 | 1.13 | 0.95 |
| 8396 | -21.28 | 1.21 | 1.29 | 4.09 | 1.13 | 0.95 |
| 8397 | -21.19 | 1.21 | 1.29 | 4.06 | 1.13 | 0.95 |
| 8398 | -21.70 | 1.05 | 1.14 | 6.79 | 1.02 | 0.99 |
| 8399 | — | — | — | — | — | — |
| 8400 | — | — | — | — | — | — |
| 8401 | -21.73 | 1.06 | 1.15 | 6.64 | 1.02 | 0.99 |
| 8402 | -21.81 | 1.09 | 1.18 | 6.11 | 1.04 | 0.97 |
| 8403 | -21.41 | 1.15 | 1.23 | 5.57 | 1.08 | 0.96 |
| 8404 | -21.33 | 1.15 | 1.24 | 5.57 | 1.08 | 0.96 |
| 8405 | -21.23 | 1.15 | 1.24 | 5.59 | 1.08 | 0.95 |
| 8406 | -21.14 | 1.16 | 1.24 | 5.61 | 1.09 | 0.95 |
| 8407 | -21.04 | 1.16 | 1.24 | 5.63 | 1.09 | 0.96 |
| 8408 | -20.93 | 1.16 | 1.24 | 5.65 | 1.09 | 0.96 |
| 8409 | -20.83 | 1.16 | 1.24 | 5.67 | 1.09 | 0.96 |
| 8410 | -20.73 | 1.16 | 1.23 | 5.68 | 1.09 | 0.96 |
| 8411 | -20.64 | 1.16 | 1.23 | 5.69 | 1.10 | 0.96 |
| 8412 | -20.55 | 1.16 | 1.23 | 5.67 | 1.10 | 0.96 |
| 8413 | -20.47 | 1.15 | 1.22 | 5.64 | 1.10 | 0.96 |
| 8414 | -21.49 | 1.01 | 1.09 | 7.65 | 0.99 | 1.01 |
| 8415 | — | — | — | — | — | — |
| 8416 | — | — | — | — | — | — |
| 8417 | -21.49 | 1.01 | 1.10 | 7.56 | 1.00 | 1.00 |
| 8418 | -21.42 | 1.04 | 1.12 | 7.24 | 1.01 | 0.99 |
| 8419 | -20.76 | 1.10 | 1.17 | 7.07 | 1.05 | 0.97 |
| 8420 | -20.66 | 1.10 | 1.17 | 7.10 | 1.05 | 0.97 |
| 8421 | -20.55 | 1.10 | 1.17 | 7.13 | 1.05 | 0.97 |
| 8422 | -20.45 | 1.10 | 1.17 | 7.17 | 1.05 | 0.97 |
| 8423 | -20.34 | 1.11 | 1.17 | 7.20 | 1.06 | 0.97 |
| 8424 | -20.24 | 1.11 | 1.17 | 7.24 | 1.06 | 0.97 |
| 8425 | -20.13 | 1.11 | 1.17 | 7.26 | 1.06 | 0.97 |

[Table 648]

681

| 8426 | -20.03 | 1.11 | 1.17 | 7.28 | 1.06 | 0.97 |
|---|---|---|---|---|---|---|
| 8427 | -19.94 | 1.11 | 1.16 | 7.28 | 1.06 | 0.97 |
| 8428 | -19.85 | 1.10 | 1.16 | 7.27 | 1.06 | 0.97 |
| 8429 | -19.78 | 1.10 | 1.15 | 7.22 | 1.06 | 0.97 |
| 8430 | -21.33 | 0.96 | 1.04 | 8.42 | 0.97 | 1.02 |
| 8431 | — | — | — | — | — | — |
| 8432 | — | — | — | — | — | — |
| 8433 | -21.29 | 0.97 | 1.04 | 8.39 | 0.97 | 1.02 |
| 8434 | -21.08 | 1.00 | 1.07 | 8.30 | 0.98 | 1.00 |
| 8435 | -20.18 | 1.05 | 1.10 | 8.53 | 1.01 | 0.98 |
| 8436 | -20.06 | 1.05 | 1.11 | 8.58 | 1.02 | 0.98 |
| 8437 | -19.95 | 1.05 | 1.11 | 8.64 | 1.02 | 0.98 |
| 8438 | -19.84 | 1.05 | 1.11 | **8.69** | 1.02 | 0.98 |
| 8439 | -19.72 | 1.05 | 1.11 | 8.74 | 1.02 | 0.98 |
| 8440 | -19.61 | 1.05 | 1.11 | 8.78 | 1.02 | 0.98 |
| 8441 | -19.50 | 1.06 | 1.11 | 8.82 | 1.03 | 0.98 |
| 8442 | -19.40 | 1.05 | 1.10 | 8.84 | 1.03 | 0.99 |
| 8443 | -19.31 | 1.05 | 1.10 | 8.85 | 1.03 | 0.99 |
| 8444 | -19.22 | 1.05 | 1.10 | 8.83 | 1.03 | 0.99 |
| 8445 | -19.16 | 1.05 | 1.09 | 8.78 | 1.02 | 0.99 |
| 8446 | -21.23 | 0.92 | 0.99 | 9.11 | 0.94 | 1.04 |
| 8447 | — | — | — | — | — | — |
| 8448 | — | — | — | — | — | — |
| 8449 | -21.16 | 0.93 | 0.99 | 9.13 | 0.94 | 1.03 |
| 8450 | -20.82 | 0.95 | 1.01 | 9.26 | 0.96 | 1.02 |
| 8451 | -19.69 | 1.00 | 1.05 | 9.90 | 0.98 | 1.00 |
| 8452 | -19.56 | 1.00 | 1.05 | 9.98 | 0.99 | 1.00 |
| 8453 | -19.44 | 1.00 | 1.05 | 10.05 | 0.99 | 1.00 |
| 8454 | -19.31 | 1.00 | 1.05 | 10.13 | 0.99 | 1.00 |
| 8455 | -19.19 | 1.00 | 1.05 | 10.19 | 0.99 | 1.00 |
| 8456 | -19.07 | 1.00 | 1.05 | 10.25 | 0.99 | 1.00 |
| 8457 | -18.96 | 1.00 | 1.04 | 10.30 | 0.99 | 1.00 |
| 8458 | -18.86 | 1.00 | 1.04 | 10.33 | 0.99 | 1.00 |
| 8459 | -18.76 | 1.00 | 1.04 | 10.34 | 0.99 | 1.00 |
| 8460 | -18.68 | 1.00 | 1.03 | 10.32 | 0.99 | 1.00 |
| 8461 | -18.62 | 1.00 | 1.03 | 10.27 | 0.99 | 1.00 |
| 8462 | -21.19 | 0.88 | 0.94 | 9.67 | 0.91 | 1.05 |
| 8463 | — | — | — | — | — | — |
| 8464 | — | — | — | — | — | — |
| 8465 | -21.09 | 0.88 | 0.94 | 9.75 | 0.91 | 1.05 |
| 8466 | -20.64 | 0.91 | 0.96 | 10.10 | 0.93 | 1.04 |
| 8467 | -19.30 | 0.95 | 0.99 | 11.16 | 0.95 | 1.02 |
| 8468 | -19.16 | 0.95 | 0.99 | 11.27 | 0.95 | 1.02 |
| 8469 | -19.03 | 0.95 | 0.99 | 11.37 | 0.96 | 1.02 |
| 8470 | -18.90 | 0.95 | 0.99 | 11.46 | 0.96 | 1.02 |
| 8471 | -18.77 | 0.95 | 0.99 | 11.55 | 0.96 | 1.02 |
| 8472 | -18.64 | 0.95 | 0.99 | 11.62 | 0.96 | 1.02 |
| 8473 | -18.53 | 0.95 | 0.99 | 11.68 | 0.96 | 1.02 |
| 8474 | -18.42 | 0.95 | 0.98 | 11.72 | 0.96 | 1.02 |
| 8475 | -18.33 | 0.95 | 0.98 | 11.74 | 0.96 | 1.02 |

[Table 649]

| 8476 | -18.25 | 0.95 | 0.97 | 11.72 | 0.96 | 1.02 |
|------|--------|------|------|-------|------|------|
| 8477 | -18.19 | 0.94 | 0.97 | 11.67 | 0.96 | 1.02 |
| 8478 | -21.23 | 0.84 | 0.89 | 10.10 | 0.88 | 1.07 |
| 8479 | – | – | – | – | – | – |
| 8480 | – | – | – | – | – | – |
| 8481 | -21.10 | 0.84 | 0.90 | 10.24 | 0.88 | 1.07 |
| 8482 | -20.54 | 0.86 | 0.91 | 10.81 | 0.90 | 1.05 |
| 8483 | -19.03 | 0.90 | 0.93 | 12.29 | 0.92 | 1.04 |
| 8484 | -18.88 | 0.90 | 0.93 | 12.42 | 0.92 | 1.04 |
| 8485 | -18.74 | 0.90 | 0.94 | 12.55 | 0.93 | 1.04 |
| 8486 | -18.59 | 0.90 | 0.93 | 12.67 | 0.93 | 1.04 |
| 8487 | -18.46 | 0.91 | 0.93 | 12.77 | 0.93 | 1.04 |
| 8488 | -18.33 | 0.91 | 0.93 | 12.86 | 0.93 | 1.04 |
| 8489 | -18.22 | 0.90 | 0.93 | 12.93 | 0.93 | 1.04 |
| 8490 | -18.11 | 0.90 | 0.93 | 12.98 | 0.93 | 1.04 |
| 8491 | -18.02 | 0.90 | 0.92 | 13.00 | 0.93 | 1.04 |
| 8492 | -17.94 | 0.90 | 0.92 | 12.99 | 0.93 | 1.04 |
| 8493 | -17.88 | 0.90 | 0.91 | 12.93 | 0.92 | 1.04 |
| 8494 | -21.35 | 0.80 | 0.84 | 10.38 | 0.85 | 1.08 |
| 8495 | – | – | – | – | – | – |
| 8496 | – | – | – | – | – | – |
| 8497 | -21.19 | 0.80 | 0.85 | 10.57 | 0.85 | 1.08 |
| 8498 | -20.54 | 0.82 | 0.86 | 11.36 | 0.87 | 1.07 |
| 8499 | -18.87 | 0.85 | 0.88 | 13.25 | 0.89 | 1.06 |
| 8500 | -18.71 | 0.86 | 0.88 | 13.41 | 0.89 | 1.06 |
| 8501 | -18.56 | 0.86 | 0.88 | 13.57 | 0.90 | 1.06 |
| 8502 | -18.42 | 0.86 | 0.88 | 13.71 | 0.90 | 1.06 |
| 8503 | -18.28 | 0.86 | 0.88 | 13.83 | 0.90 | 1.06 |
| 8504 | -18.15 | 0.86 | 0.88 | 13.94 | 0.90 | 1.06 |
| 8505 | -18.03 | 0.86 | 0.88 | 14.02 | 0.90 | 1.06 |
| 8506 | -17.92 | 0.86 | 0.87 | 14.08 | 0.90 | 1.06 |
| 8507 | -17.83 | 0.85 | 0.87 | 14.11 | 0.90 | 1.06 |
| 8508 | -17.76 | 0.85 | 0.87 | 14.10 | 0.90 | 1.06 |
| 8509 | -17.71 | 0.85 | 0.86 | 14.04 | 0.89 | 1.06 |
| 8510 | -21.57 | 0.76 | 0.80 | 10.48 | 0.82 | 1.10 |
| 8511 | – | – | – | – | – | – |
| 8512 | – | – | – | – | – | – |
| 8513 | -21.39 | 0.76 | 0.80 | 10.73 | 0.82 | 1.10 |
| 8514 | -20.64 | 0.78 | 0.82 | 11.73 | 0.84 | 1.09 |
| 8515 | -18.83 | 0.81 | 0.83 | 14.03 | 0.86 | 1.08 |
| 8516 | -18.67 | 0.81 | 0.83 | 14.22 | 0.86 | 1.08 |
| 8517 | -18.51 | 0.81 | 0.83 | 14.40 | 0.87 | 1.08 |
| 8518 | -18.36 | 0.81 | 0.83 | 14.56 | 0.87 | 1.08 |
| 8519 | -18.22 | 0.81 | 0.83 | 14.71 | 0.87 | 1.08 |
| 8520 | -18.09 | 0.81 | 0.83 | 14.83 | 0.87 | 1.08 |
| 8521 | -17.97 | 0.81 | 0.83 | 14.93 | 0.87 | 1.08 |
| 8522 | -17.86 | 0.81 | 0.82 | 15.00 | 0.87 | 1.08 |
| 8523 | -17.77 | 0.81 | 0.82 | 15.03 | 0.87 | 1.08 |
| 8524 | -17.70 | 0.80 | 0.82 | 15.02 | 0.87 | 1.08 |
| 8525 | -17.66 | 0.80 | 0.81 | 14.95 | 0.86 | 1.08 |

[Table 650]

| 8526 | -21.90 | 0.72 | 0.75 | 10.38 | 0.79 | 1.11 |
|---|---|---|---|---|---|---|
| 8527 | — | — | — | — | — | — |
| 8528 | — | — | — | — | — | — |
| 8529 | -21.69 | 0.72 | 0.76 | 10.69 | 0.79 | 1.11 |
| 8530 | -20.87 | 0.74 | 0.77 | 11.90 | 0.81 | 1.11 |
| 8531 | -18.93 | 0.77 | 0.79 | 14.60 | 0.83 | 1.10 |
| 8532 | -18.75 | 0.77 | 0.79 | 14.82 | 0.83 | 1.10 |
| 8533 | -18.59 | 0.77 | 0.79 | 15.03 | 0.84 | 1.10 |
| 8534 | -18.44 | 0.77 | 0.79 | 15.21 | 0.84 | 1.10 |
| 8535 | -18.29 | 0.77 | 0.78 | 15.37 | 0.84 | 1.10 |
| 8536 | -18.15 | 0.77 | 0.78 | 15.51 | 0.84 | 1.10 |
| 8537 | -18.03 | 0.77 | 0.78 | 15.62 | 0.84 | 1.10 |
| 8538 | -17.93 | 0.77 | 0.78 | 15.70 | 0.84 | 1.11 |
| 8539 | -17.84 | 0.76 | 0.77 | 15.74 | 0.84 | 1.11 |
| 8540 | -17.78 | 0.76 | 0.77 | 15.72 | 0.83 | 1.11 |
| 8541 | -17.75 | 0.76 | 0.76 | 15.65 | 0.83 | 1.11 |
| 8542 | -22.36 | 0.68 | 0.71 | 10.06 | 0.75 | 1.13 |
| 8543 | — | — | — | — | — | — |
| 8544 | — | — | — | — | — | — |
| 8545 | -22.13 | 0.68 | 0.71 | 10.42 | 0.76 | 1.12 |
| 8546 | -21.21 | 0.70 | 0.73 | 11.83 | 0.77 | 1.12 |
| 8547 | -19.14 | 0.72 | 0.74 | 14.94 | 0.80 | 1.12 |
| 8548 | -18.96 | 0.72 | 0.74 | 15.18 | 0.80 | 1.12 |
| 8549 | -18.80 | 0.72 | 0.74 | 15.41 | 0.81 | 1.12 |
| 8550 | -18.64 | 0.73 | 0.74 | 15.62 | 0.81 | 1.12 |
| 8551 | -18.49 | 0.73 | 0.74 | 15.80 | 0.81 | 1.13 |
| 8552 | -18.35 | 0.72 | 0.74 | 15.96 | 0.81 | 1.13 |
| 8553 | -18.23 | 0.72 | 0.74 | 16.08 | 0.81 | 1.13 |
| 8554 | -18.13 | 0.72 | 0.73 | 16.16 | 0.81 | 1.13 |
| 8555 | -18.05 | 0.72 | 0.73 | 16.20 | 0.81 | 1.13 |
| 8556 | -17.99 | 0.72 | 0.72 | 16.19 | 0.80 | 1.13 |
| 8557 | -17.96 | 0.71 | 0.72 | 16.11 | 0.80 | 1.13 |
| 8558 | -22.97 | 0.64 | 0.66 | 9.50 | 0.71 | 1.13 |
| 8559 | — | — | — | — | — | — |
| 8560 | — | — | — | — | — | — |
| 8561 | -22.71 | 0.64 | 0.67 | 9.91 | 0.72 | 1.14 |
| 8562 | -21.71 | 0.66 | 0.68 | 11.52 | 0.74 | 1.14 |
| 8563 | -19.50 | 0.68 | 0.70 | 15.01 | 0.77 | 1.14 |
| 8564 | -19.32 | 0.68 | 0.70 | 15.28 | 0.77 | 1.14 |
| 8565 | -19.14 | 0.68 | 0.70 | 15.54 | 0.78 | 1.15 |
| 8566 | -18.98 | 0.68 | 0.70 | 15.76 | 0.78 | 1.15 |
| 8567 | -18.82 | 0.68 | 0.70 | 15.97 | 0.78 | 1.15 |
| 8568 | -18.69 | 0.68 | 0.69 | 16.13 | 0.78 | 1.15 |
| 8569 | -18.57 | 0.68 | 0.69 | 16.27 | 0.78 | 1.15 |
| 8570 | -18.46 | 0.68 | 0.69 | 16.36 | 0.78 | 1.15 |
| 8571 | -18.39 | 0.68 | 0.68 | 16.39 | 0.78 | 1.16 |
| 8572 | -18.34 | 0.67 | 0.68 | 16.38 | 0.77 | 1.16 |
| 8573 | -18.32 | 0.67 | 0.67 | 16.28 | 0.77 | 1.16 |
| 8574 | -23.76 | 0.60 | 0.62 | 8.67 | 0.67 | 1.14 |
| 8575 | — | — | — | — | — | — |

[Table 651]

| 8576 | — | — | — | — | — | — |
|------|---|---|---|---|---|---|
| 8577 | -23.47 | 0.60 | 0.62 | 9.13 | 0.68 | 1.14 |
| 8578 | -22.38 | 0.62 | 0.64 | 10.92 | 0.70 | 1.15 |
| 8579 | -20.01 | 0.64 | 0.65 | 14.78 | 0.74 | 1.16 |
| 8580 | -19.82 | 0.64 | 0.65 | 15.08 | 0.74 | 1.17 |
| 8581 | -19.63 | 0.64 | 0.65 | 15.36 | 0.74 | 1.17 |
| 8582 | -19.46 | 0.64 | 0.65 | 15.61 | 0.75 | 1.17 |
| 8583 | -19.30 | 0.64 | 0.65 | 15.82 | 0.75 | 1.17 |
| 8584 | -19.17 | 0.64 | 0.65 | 16.00 | 0.75 | 1.17 |
| 8585 | -19.04 | 0.64 | 0.65 | 16.14 | 0.75 | 1.18 |
| 8586 | -18.94 | 0.64 | 0.65 | 16.24 | 0.75 | 1.18 |
| 8587 | -18.87 | 0.64 | 0.64 | 16.27 | 0.75 | 1.18 |
| 8588 | -18.83 | 0.63 | 0.64 | 16.25 | 0.74 | 1.18 |
| 8589 | -18.83 | 0.63 | 0.63 | 16.13 | 0.74 | 1.18 |
| 8590 | -21.15 | 1.17 | 1.29 | 5.87 | 1.11 | 0.97 |
| 8591 | — | — | — | — | — | — |
| 8592 | — | — | — | — | — | — |
| 8593 | -21.27 | 1.18 | 1.30 | 5.60 | 1.11 | 0.96 |
| 8594 | -21.79 | 1.23 | 1.35 | 4.37 | 1.14 | 0.95 |
| 8595 | -21.94 | 1.29 | 1.42 | 3.10 | 1.18 | 0.93 |
| 8596 | -21.87 | 1.30 | 1.42 | 3.07 | 1.19 | 0.93 |
| 8597 | -21.79 | 1.30 | 1.43 | 3.05 | 1.19 | 0.93 |
| 8598 | -21.71 | 1.31 | 1.43 | 3.05 | 1.19 | 0.93 |
| 8599 | -21.62 | 1.31 | 1.43 | 3.05 | 1.20 | 0.93 |
| 8600 | -21.51 | 1.31 | 1.43 | 3.07 | 1.20 | 0.93 |
| 8601 | -21.41 | 1.31 | 1.43 | 3.08 | 1.20 | 0.93 |
| 8602 | -21.30 | 1.31 | 1.43 | 3.10 | 1.21 | 0.94 |
| 8603 | -21.19 | 1.31 | 1.43 | 3.11 | 1.21 | 0.94 |
| 8604 | -21.08 | 1.31 | 1.42 | 3.11 | 1.21 | 0.94 |
| 8605 | -20.97 | 1.31 | 1.41 | 3.09 | 1.21 | 0.94 |
| 8606 | -20.86 | 1.12 | 1.23 | 6.84 | 1.08 | 0.98 |
| 8607 | — | — | — | — | — | — |
| 8608 | — | — | — | — | — | — |
| 8609 | -20.94 | 1.13 | 1.24 | 6.63 | 1.09 | 0.98 |
| 8610 | -21.26 | 1.18 | 1.29 | 5.65 | 1.11 | 0.96 |
| 8611 | -21.14 | 1.24 | 1.35 | 4.68 | 1.15 | 0.95 |
| 8612 | -21.07 | 1.25 | 1.35 | 4.66 | 1.15 | 0.94 |
| 8613 | -20.98 | 1.25 | 1.36 | 4.66 | 1.16 | 0.94 |
| 8614 | -20.89 | 1.25 | 1.36 | 4.66 | 1.16 | 0.94 |
| 8615 | -20.79 | 1.25 | 1.36 | 4.68 | 1.16 | 0.94 |
| 8616 | -20.69 | 1.26 | 1.36 | 4.69 | 1.17 | 0.95 |
| 8617 | -20.58 | 1.26 | 1.36 | 4.71 | 1.17 | 0.95 |
| 8618 | -20.48 | 1.26 | 1.36 | 4.72 | 1.17 | 0.95 |
| 8619 | -20.37 | 1.26 | 1.35 | 4.72 | 1.17 | 0.95 |
| 8620 | -20.27 | 1.25 | 1.35 | 4.72 | 1.17 | 0.95 |
| 8621 | -20.18 | 1.25 | 1.34 | 4.69 | 1.17 | 0.95 |
| 8622 | -20.61 | 1.08 | 1.18 | 7.77 | 1.06 | 1.00 |
| 8623 | — | — | — | — | — | — |
| 8624 | — | — | — | — | — | — |
| 8625 | -20.64 | 1.09 | 1.19 | 7.61 | 1.06 | 1.00 |

[Table 652]

685

| 8626 | -20.77 | 1.13 | 1.23 | 6.88 | 1.08 | 0.98 |
|------|--------|------|------|------|------|------|
| 8627 | -20.38 | 1.19 | 1.28 | 6.27 | 1.12 | 0.96 |
| 8628 | -20.29 | 1.19 | 1.28 | 6.27 | 1.12 | 0.96 |
| 8629 | -20.20 | 1.20 | 1.29 | 6.28 | 1.13 | 0.96 |
| 8630 | -20.10 | 1.20 | 1.29 | 6.30 | 1.13 | 0.96 |
| 8631 | -19.99 | 1.20 | 1.29 | 6.32 | 1.13 | 0.96 |
| 8632 | -19.89 | 1.20 | 1.29 | 6.34 | 1.13 | 0.96 |
| 8633 | -19.78 | 1.20 | 1.29 | 6.36 | 1.14 | 0.96 |
| 8634 | -19.67 | 1.20 | 1.28 | 6.38 | 1.14 | 0.96 |
| 8635 | -19.57 | 1.20 | 1.28 | 6.38 | 1.14 | 0.96 |
| 8636 | -19.48 | 1.20 | 1.28 | 6.37 | 1.14 | 0.96 |
| 8637 | -19.39 | 1.20 | 1.27 | 6.34 | 1.14 | 0.96 |
| 8638 | -20.39 | 1.03 | 1.13 | 8.63 | 1.03 | 1.02 |
| 8639 | — | — | — | — | — | — |
| 8640 | — | — | — | — | — | — |
| 8641 | -20.39 | 1.04 | 1.13 | 8.52 | 1.04 | 1.01 |
| 8642 | -20.33 | 1.08 | 1.17 | 8.07 | 1.06 | 1.00 |
| 8643 | -19.67 | 1.14 | 1.22 | 7.84 | 1.09 | 0.97 |
| 8644 | -19.57 | 1.14 | 1.22 | 7.86 | 1.09 | 0.97 |
| 8645 | -19.46 | 1.14 | 1.22 | 7.90 | 1.09 | 0.97 |
| 8646 | -19.35 | 1.15 | 1.22 | 7.93 | 1.10 | 0.97 |
| 8647 | -19.24 | 1.15 | 1.22 | 7.96 | 1.10 | 0.97 |
| 8648 | -19.13 | 1.15 | 1.22 | 7.99 | 1.10 | 0.97 |
| 8649 | -19.02 | 1.15 | 1.22 | 8.02 | 1.10 | 0.97 |
| 8650 | -18.92 | 1.15 | 1.22 | 8.04 | 1.10 | 0.97 |
| 8651 | -18.82 | 1.15 | 1.21 | 8.04 | 1.10 | 0.97 |
| 8652 | -18.73 | 1.14 | 1.21 | 8.03 | 1.10 | 0.98 |
| 8653 | -18.65 | 1.14 | 1.20 | 7.99 | 1.10 | 0.98 |
| 8654 | -20.22 | 0.99 | 1.07 | 9.41 | 1.01 | 1.03 |
| 8655 | — | — | — | — | — | — |
| 8656 | — | — | — | — | — | — |
| 8657 | -20.19 | 1.00 | 1.08 | 9.37 | 1.01 | 1.03 |
| 8658 | -19.96 | 1.03 | 1.11 | 9.19 | 1.03 | 1.01 |
| 8659 | -19.04 | 1.08 | 1.15 | 9.36 | 1.06 | 0.99 |
| 8660 | -18.92 | 1.09 | 1.15 | 9.41 | 1.06 | 0.99 |
| 8661 | -18.80 | 1.09 | 1.16 | 9.46 | 1.06 | 0.99 |
| 8662 | -18.68 | 1.09 | 1.16 | 9.51 | 1.06 | 0.99 |
| 8663 | -18.57 | 1.09 | 1.16 | 9.56 | 1.07 | 0.99 |
| 8664 | -18.45 | 1.10 | 1.15 | 9.61 | 1.07 | 0.99 |
| 8665 | -18.34 | 1.10 | 1.15 | 9.64 | 1.07 | 0.99 |
| 8666 | -18.23 | 1.09 | 1.15 | 9.67 | 1.07 | 0.99 |
| 8667 | -18.13 | 1.09 | 1.15 | 9.67 | 1.07 | 0.99 |
| 8668 | -18.04 | 1.09 | 1.14 | 9.66 | 1.07 | 0.99 |
| 8669 | -17.97 | 1.09 | 1.14 | 9.62 | 1.07 | 0.99 |
| 8670 | -20.11 | 0.95 | 1.02 | 10.10 | 0.98 | 1.05 |
| 8671 | — | — | — | — | — | — |
| 8672 | — | — | — | — | — | — |
| 8673 | -20.04 | 0.96 | 1.03 | 10.11 | 0.98 | 1.05 |
| 8674 | -19.65 | 0.99 | 1.06 | 10.21 | 1.00 | 1.03 |
| 8675 | -18.50 | 1.03 | 1.09 | 10.80 | 1.03 | 1.01 |

[Table 653]

| 8676 | -18.37 | 1.04 | 1.09 | 10.87 | 1.03 | 1.01 |
|------|--------|------|------|-------|------|------|
| 8677 | -18.24 | 1.04 | 1.09 | 10.95 | 1.03 | 1.00 |
| 8678 | -18.11 | 1.04 | 1.09 | 11.02 | 1.03 | 1.00 |
| 8679 | -17.98 | 1.04 | 1.09 | 11.09 | 1.03 | 1.00 |
| 8680 | -17.86 | 1.04 | 1.09 | 11.15 | 1.04 | 1.00 |
| 8681 | -17.74 | 1.04 | 1.09 | 11.20 | 1.04 | 1.00 |
| 8682 | -17.64 | 1.04 | 1.09 | 11.23 | 1.04 | 1.01 |
| 8683 | -17.54 | 1.04 | 1.08 | 11.24 | 1.04 | 1.01 |
| 8684 | -17.45 | 1.04 | 1.08 | 11.22 | 1.04 | 1.01 |
| 8685 | -17.38 | 1.03 | 1.07 | 11.18 | 1.04 | 1.01 |
| 8686 | -20.05 | 0.91 | 0.98 | 10.68 | 0.95 | 1.07 |
| 8687 | – | – | – | – | – | – |
| 8688 | – | – | – | – | – | – |
| 8689 | -19.95 | 0.91 | 0.98 | 10.75 | 0.96 | 1.06 |
| 8690 | -19.41 | 0.94 | 1.01 | 11.13 | 0.97 | 1.05 |
| 8691 | -18.06 | 0.99 | 1.03 | 12.13 | 1.00 | 1.02 |
| 8692 | -17.92 | 0.99 | 1.03 | 12.24 | 1.00 | 1.02 |
| 8693 | -17.78 | 0.99 | 1.03 | 12.34 | 1.00 | 1.02 |
| 8694 | -17.64 | 0.99 | 1.03 | 12.43 | 1.00 | 1.02 |
| 8695 | -17.51 | 0.99 | 1.03 | 12.52 | 1.00 | 1.02 |
| 8696 | -17.38 | 0.99 | 1.03 | 12.59 | 1.00 | 1.02 |
| 8697 | -17.26 | 0.99 | 1.03 | 12.65 | 1.01 | 1.02 |
| 8698 | -17.15 | 0.99 | 1.03 | 12.69 | 1.01 | 1.02 |
| 8699 | -17.05 | 0.99 | 1.02 | 12.71 | 1.01 | 1.02 |
| 8700 | -16.97 | 0.99 | 1.02 | 12.70 | 1.00 | 1.03 |
| 8701 | -16.90 | 0.98 | 1.01 | 12.64 | 1.00 | 1.03 |
| 8702 | -20.06 | 0.87 | 0.93 | 11.14 | 0.92 | 1.09 |
| 8703 | – | – | – | – | – | – |
| 8704 | – | – | – | – | – | – |
| 8705 | -19.93 | 0.87 | 0.93 | 11.26 | 0.93 | 1.08 |
| 8706 | -19.26 | 0.90 | 0.96 | 11.91 | 0.94 | 1.07 |
| 8707 | -17.73 | 0.94 | 0.98 | 13.33 | 0.97 | 1.04 |
| 8708 | -17.58 | 0.94 | 0.98 | 13.47 | 0.97 | 1.04 |
| 8709 | -17.43 | 0.94 | 0.98 | 13.60 | 0.97 | 1.04 |
| 8710 | -17.29 | 0.94 | 0.98 | 13.71 | 0.97 | 1.04 |
| 8711 | -17.15 | 0.94 | 0.98 | 13.82 | 0.97 | 1.04 |
| 8712 | -17.02 | 0.94 | 0.98 | 13.91 | 0.97 | 1.04 |
| 8713 | -16.90 | 0.94 | 0.97 | 13.98 | 0.97 | 1.04 |
| 8714 | -16.79 | 0.94 | 0.97 | 14.03 | 0.97 | 1.04 |
| 8715 | -16.69 | 0.94 | 0.97 | 14.05 | 0.97 | 1.05 |
| 8716 | -16.61 | 0.94 | 0.96 | 14.04 | 0.97 | 1.05 |
| 8717 | -16.55 | 0.93 | 0.96 | 13.99 | 0.97 | 1.05 |
| 8718 | -20.14 | 0.83 | 0.88 | 11.44 | 0.90 | 1.10 |
| 8719 | – | – | – | – | – | – |
| 8720 | – | – | – | – | – | – |
| 8721 | -19.99 | 0.83 | 0.89 | 11.63 | 0.90 | 1.10 |
| 8722 | -19.20 | 0.86 | 0.91 | 12.55 | 0.91 | 1.08 |
| 8723 | -17.52 | 0.89 | 0.93 | 14.38 | 0.94 | 1.07 |
| 8724 | -17.36 | 0.89 | 0.93 | 14.55 | 0.94 | 1.06 |
| 8725 | -17.21 | 0.89 | 0.93 | 14.70 | 0.94 | 1.06 |

[Table 654]

687

| 8726 | -17.06 | 0.89 | 0.93 | 14.84 | 0.94 | 1.06 |
|------|--------|------|------|-------|------|------|
| 8727 | -16.91 | 0.89 | 0.92 | 14.97 | 0.94 | 1.06 |
| 8728 | -16.78 | 0.89 | 0.92 | 15.07 | 0.94 | 1.06 |
| 8729 | -16.66 | 0.89 | 0.92 | 15.16 | 0.94 | 1.07 |
| 8730 | -16.55 | 0.89 | 0.92 | 15.22 | 0.94 | 1.07 |
| 8731 | -16.45 | 0.89 | 0.91 | 15.25 | 0.94 | 1.07 |
| 8732 | -16.37 | 0.89 | 0.91 | 15.23 | 0.94 | 1.07 |
| 8733 | -16.31 | 0.88 | 0.90 | 15.17 | 0.94 | 1.07 |
| 8734 | -20.32 | 0.79 | 0.84 | 11.58 | 0.87 | 1.12 |
| 8735 | — | — | — | — | — | — |
| 8736 | — | — | — | — | — | — |
| 8737 | -20.14 | 0.79 | 0.84 | 11.82 | 0.87 | 1.12 |
| 8738 | -19.24 | 0.81 | 0.86 | 13.01 | 0.89 | 1.10 |
| 8739 | -17.43 | 0.84 | 0.88 | 15.26 | 0.91 | 1.09 |
| 8740 | -17.26 | 0.85 | 0.88 | 15.45 | 0.91 | 1.09 |
| 8741 | -17.10 | 0.85 | 0.88 | 15.63 | 0.91 | 1.09 |
| 8742 | -16.94 | 0.85 | 0.88 | 15.79 | 0.91 | 1.09 |
| 8743 | -16.80 | 0.85 | 0.87 | 15.94 | 0.91 | 1.09 |
| 8744 | -16.66 | 0.85 | 0.87 | 16.06 | 0.92 | 1.09 |
| 8745 | -16.54 | 0.85 | 0.87 | 16.16 | 0.92 | 1.09 |
| 8746 | -16.43 | 0.85 | 0.87 | 16.23 | 0.91 | 1.09 |
| 8747 | -16.34 | 0.84 | 0.86 | 16.26 | 0.91 | 1.09 |
| 8748 | -16.26 | 0.84 | 0.86 | 16.25 | 0.91 | 1.09 |
| 8749 | -16.21 | 0.84 | 0.85 | 16.18 | 0.91 | 1.09 |
| 8750 | -20.59 | 0.75 | 0.79 | 11.53 | 0.83 | 1.14 |
| 8751 | — | — | — | — | — | — |
| 8752 | — | — | — | — | — | — |
| 8753 | -20.39 | 0.75 | 0.80 | 11.82 | 0.84 | 1.13 |
| 8754 | -19.39 | 0.77 | 0.81 | 13.28 | 0.86 | 1.12 |
| 8755 | -17.45 | 0.80 | 0.83 | 15.93 | 0.88 | 1.11 |
| 8756 | -17.28 | 0.80 | 0.83 | 16.15 | 0.88 | 1.11 |
| 8757 | -17.11 | 0.80 | 0.83 | 16.36 | 0.88 | 1.11 |
| 8758 | -16.95 | 0.80 | 0.83 | 16.54 | 0.89 | 1.11 |
| 8759 | -16.80 | 0.80 | 0.83 | 16.71 | 0.89 | 1.11 |
| 8760 | -16.66 | 0.80 | 0.82 | 16.85 | 0.89 | 1.11 |
| 8761 | -16.54 | 0.80 | 0.82 | 16.96 | 0.89 | 1.11 |
| 8762 | -16.43 | 0.80 | 0.82 | 17.04 | 0.89 | 1.11 |
| 8763 | -16.34 | 0.80 | 0.81 | 17.07 | 0.88 | 1.12 |
| 8764 | -16.28 | 0.79 | 0.81 | 17.06 | 0.88 | 1.12 |
| 8765 | -16.24 | 0.79 | 0.80 | 16.98 | 0.88 | 1.12 |
| 8766 | -20.99 | 0.71 | 0.75 | 11.25 | 0.80 | 1.15 |
| 8767 | — | — | — | — | — | — |
| 8768 | — | — | — | — | — | — |
| 8769 | -20.76 | 0.71 | 0.75 | 11.61 | 0.81 | 1.15 |
| 8770 | -19.65 | 0.73 | 0.77 | 13.33 | 0.82 | 1.14 |
| 8771 | -17.59 | 0.76 | 0.78 | 16.38 | 0.85 | 1.13 |
| 8772 | -17.41 | 0.76 | 0.78 | 16.63 | 0.85 | 1.14 |
| 8773 | -17.24 | 0.76 | 0.78 | 16.86 | 0.86 | 1.14 |
| 8774 | -17.08 | 0.76 | 0.78 | 17.07 | 0.86 | 1.14 |
| 8775 | -16.93 | 0.76 | 0.78 | 17.25 | 0.86 | 1.14 |

[Table 655]

| 8776 | -16.79 | 0.76 | 0.78 | 17.41 | 0.86 | 1.14 |
|------|--------|------|------|-------|------|------|
| 8777 | -16.67 | 0.76 | 0.78 | 17.53 | 0.86 | 1.14 |
| 8778 | -16.56 | 0.76 | 0.77 | 17.62 | 0.86 | 1.14 |
| 8779 | -16.48 | 0.75 | 0.77 | 17.65 | 0.85 | 1.14 |
| 8780 | -16.42 | 0.75 | 0.76 | 17.64 | 0.85 | 1.14 |
| 8781 | -16.39 | 0.75 | 0.76 | 17.55 | 0.85 | 1.14 |
| 8782 | -21.52 | 0.67 | 0.71 | 10.74 | 0.77 | 1.16 |
| 8783 | – | – | – | – | – | – |
| 8784 | – | – | – | – | – | – |
| 8785 | -21.27 | 0.67 | 0.71 | 11.15 | 0.77 | 1.16 |
| 8786 | -20.05 | 0.69 | 0.73 | 13.13 | 0.79 | 1.16 |
| 8787 | -17.87 | 0.72 | 0.74 | 16.58 | 0.82 | 1.16 |
| 8788 | -17.68 | 0.72 | 0.74 | 16.86 | 0.82 | 1.16 |
| 8789 | -17.50 | 0.72 | 0.74 | 17.11 | 0.83 | 1.16 |
| 8790 | -17.34 | 0.72 | 0.74 | 17.34 | 0.83 | 1.16 |
| 8791 | -17.18 | 0.72 | 0.74 | 17.55 | 0.83 | 1.16 |
| 8792 | -17.05 | 0.72 | 0.74 | 17.72 | 0.83 | 1.16 |
| 8793 | -16.92 | 0.72 | 0.73 | 17.85 | 0.83 | 1.17 |
| 8794 | -16.82 | 0.71 | 0.73 | 17.94 | 0.83 | 1.17 |
| 8795 | -16.74 | 0.71 | 0.73 | 17.98 | 0.83 | 1.17 |
| 8796 | -16.69 | 0.71 | 0.72 | 17.96 | 0.82 | 1.17 |
| 8797 | -16.67 | 0.70 | 0.71 | 17.86 | 0.82 | 1.17 |
| 8798 | -20.17 | 1.21 | 1.33 | 6.60 | 1.15 | 0.97 |
| 8799 | – | – | – | – | – | – |
| 8800 | – | – | – | – | – | – |
| 8801 | -20.30 | 1.22 | 1.34 | 6.32 | 1.15 | 0.97 |
| 8802 | -20.84 | 1.26 | 1.40 | 5.04 | 1.18 | 0.95 |
| 8803 | -21.03 | 1.34 | 1.47 | 3.66 | 1.22 | 0.93 |
| 8804 | -20.97 | 1.34 | 1.48 | 3.62 | 1.23 | 0.93 |
| 8805 | -20.89 | 1.35 | 1.48 | 3.60 | 1.23 | 0.93 |
| 8806 | -20.80 | 1.35 | 1.48 | 3.59 | 1.24 | 0.93 |
| 8807 | -20.71 | 1.35 | 1.48 | 3.59 | 1.24 | 0.93 |
| 8808 | -20.61 | 1.36 | 1.48 | 3.60 | 1.24 | 0.93 |
| 8809 | -20.50 | 1.36 | 1.48 | 3.62 | 1.24 | 0.93 |
| 8810 | -20.38 | 1.36 | 1.48 | 3.63 | 1.25 | 0.94 |
| 8811 | -20.27 | 1.36 | 1.48 | 3.64 | 1.25 | 0.94 |
| 8812 | -20.15 | 1.35 | 1.47 | 3.64 | 1.25 | 0.94 |
| 8813 | -20.05 | 1.35 | 1.47 | 3.63 | 1.25 | 0.94 |
| 8814 | -19.85 | 1.16 | 1.28 | 7.62 | 1.12 | 0.99 |
| 8815 | – | – | – | – | – | – |
| 8816 | – | – | – | – | – | – |
| 8817 | -19.93 | 1.17 | 1.29 | 7.40 | 1.13 | 0.98 |
| 8818 | -20.27 | 1.21 | 1.33 | 6.36 | 1.15 | 0.97 |
| 8819 | -20.18 | 1.28 | 1.40 | 5.30 | 1.19 | 0.95 |
| 8820 | -20.10 | 1.29 | 1.41 | 5.28 | 1.20 | 0.95 |
| 8821 | -20.02 | 1.29 | 1.41 | 5.27 | 1.20 | 0.95 |
| 8822 | -19.93 | 1.30 | 1.41 | 5.27 | 1.20 | 0.94 |
| 8823 | -19.82 | 1.30 | 1.41 | 5.28 | 1.21 | 0.94 |
| 8824 | -19.72 | 1.30 | 1.41 | 5.29 | 1.21 | 0.95 |
| 8825 | -19.61 | 1.30 | 1.41 | 5.30 | 1.21 | 0.95 |

[Table 656]

689

| 8826 | -19.50 | 1.30 | 1.41 | 5.31 | 1.21 | 0.95 |
|------|--------|------|------|-------|------|------|
| 8827 | -19.39 | 1.30 | 1.41 | 5.32 | 1.22 | 0.95 |
| 8828 | -19.29 | 1.30 | 1.40 | 5.31 | 1.22 | 0.95 |
| 8829 | -19.19 | 1.29 | 1.39 | 5.29 | 1.22 | 0.95 |
| 8830 | -19.56 | 1.12 | 1.22 | 8.61 | 1.10 | 1.00 |
| 8831 | — | — | — | — | — | — |
| 8832 | — | — | — | — | — | — |
| 8833 | -19.60 | 1.12 | 1.23 | 8.44 | 1.10 | 1.00 |
| 8834 | -19.74 | 1.17 | 1.27 | 7.66 | 1.12 | 0.98 |
| 8835 | -19.36 | 1.23 | 1.33 | 6.95 | 1.16 | 0.96 |
| 8836 | -19.27 | 1.23 | 1.33 | 6.95 | 1.17 | 0.96 |
| 8837 | -19.18 | 1.24 | 1.34 | 6.96 | 1.17 | 0.96 |
| 8838 | -19.08 | 1.24 | 1.34 | 6.97 | 1.17 | 0.96 |
| 8839 | -18.97 | 1.24 | 1.34 | 6.99 | 1.17 | 0.96 |
| 8840 | -18.86 | 1.24 | 1.34 | 7.01 | 1.18 | 0.96 |
| 8841 | -18.75 | 1.25 | 1.34 | 7.03 | 1.18 | 0.96 |
| 8842 | -18.64 | 1.25 | 1.33 | 7.04 | 1.18 | 0.96 |
| 8843 | -18.54 | 1.24 | 1.33 | 7.04 | 1.18 | 0.96 |
| 8844 | -18.44 | 1.24 | 1.33 | 7.03 | 1.18 | 0.96 |
| 8845 | -18.34 | 1.24 | 1.32 | 7.00 | 1.18 | 0.96 |
| 8846 | -19.30 | 1.07 | 1.17 | 9.53 | 1.07 | 1.02 |
| 8847 | — | — | — | — | — | — |
| 8848 | — | — | — | — | — | — |
| 8849 | -19.31 | 1.08 | 1.18 | 9.41 | 1.08 | 1.02 |
| 8850 | -19.26 | 1.12 | 1.22 | 8.91 | 1.10 | 1.00 |
| 8851 | -18.61 | 1.18 | 1.26 | 8.59 | 1.13 | 0.98 |
| 8852 | -18.50 | 1.18 | 1.27 | 8.61 | 1.13 | 0.97 |
| 8853 | -18.39 | 1.18 | 1.27 | 8.64 | 1.14 | 0.97 |
| 8854 | -18.28 | 1.19 | 1.27 | 8.67 | 1.14 | 0.97 |
| 8855 | -18.17 | 1.19 | 1.27 | 8.70 | 1.14 | 0.97 |
| 8856 | -18.05 | 1.19 | 1.27 | 8.73 | 1.14 | 0.97 |
| 8857 | -17.94 | 1.19 | 1.27 | 8.75 | 1.15 | 0.97 |
| 8858 | -17.83 | 1.19 | 1.27 | 8.77 | 1.15 | 0.97 |
| 8859 | -17.73 | 1.19 | 1.26 | 8.77 | 1.15 | 0.98 |
| 8860 | -17.63 | 1.19 | 1.26 | 8.76 | 1.15 | 0.98 |
| 8861 | -17.54 | 1.18 | 1.25 | 8.72 | 1.15 | 0.98 |
| 8862 | -19.09 | 1.03 | 1.12 | 10.38 | 1.05 | 1.04 |
| 8863 | — | — | — | — | — | — |
| 8864 | — | — | — | — | — | — |
| 8865 | -19.06 | 1.03 | 1.13 | 10.32 | 1.05 | 1.04 |
| 8866 | -18.84 | 1.07 | 1.16 | 10.08 | 1.07 | 1.02 |
| 8867 | -17.93 | 1.12 | 1.20 | 10.17 | 1.10 | 0.99 |
| 8868 | -17.81 | 1.13 | 1.20 | 10.22 | 1.10 | 0.99 |
| 8869 | -17.68 | 1.13 | 1.20 | 10.27 | 1.11 | 0.99 |
| 8870 | -17.56 | 1.13 | 1.20 | 10.32 | 1.11 | 0.99 |
| 8871 | -17.44 | 1.13 | 1.20 | 10.36 | 1.11 | 0.99 |
| 8872 | -17.32 | 1.14 | 1.20 | 10.40 | 1.11 | 0.99 |
| 8873 | -17.20 | 1.14 | 1.20 | 10.44 | 1.11 | 0.99 |
| 8874 | -17.09 | 1.14 | 1.20 | 10.46 | 1.11 | 0.99 |
| 8875 | -16.99 | 1.13 | 1.19 | 10.47 | 1.11 | 0.99 |

[Table 657]

| 8876 | -16.89 | 1.13 | 1.19 | 10.45 | 1.11 | 0.99 |
|---|---|---|---|---|---|---|
| 8877 | -16.81 | 1.13 | 1.18 | 10.41 | 1.11 | 0.99 |
| 8878 | -18.92 | 0.98 | 1.07 | 11.14 | 1.02 | 1.06 |
| 8879 | – | – | – | – | – | – |
| 8880 | – | – | – | – | – | – |
| 8881 | -18.86 | 0.99 | 1.08 | 11.14 | 1.03 | 1.06 |
| 8882 | -18.46 | 1.02 | 1.10 | 11.17 | 1.04 | 1.04 |
| 8883 | -17.33 | 1.07 | 1.14 | 11.68 | 1.07 | 1.01 |
| 8884 | -17.20 | 1.08 | 1.14 | 11.76 | 1.07 | 1.01 |
| 8885 | -17.07 | 1.08 | 1.14 | 11.83 | 1.07 | 1.01 |
| 8886 | -16.94 | 1.08 | 1.14 | 11.90 | 1.08 | 1.01 |
| 8887 | -16.81 | 1.08 | 1.14 | 11.96 | 1.08 | 1.01 |
| 8888 | -16.68 | 1.08 | 1.14 | 12.02 | 1.08 | 1.01 |
| 8889 | -16.56 | 1.08 | 1.14 | 12.07 | 1.08 | 1.01 |
| 8890 | -16.45 | 1.08 | 1.13 | 12.10 | 1.08 | 1.01 |
| 8891 | -16.34 | 1.08 | 1.13 | 12.11 | 1.08 | 1.01 |
| 8892 | -16.25 | 1.08 | 1.12 | 12.09 | 1.08 | 1.01 |
| 8893 | -16.17 | 1.07 | 1.12 | 12.05 | 1.08 | 1.01 |
| 8894 | -18.82 | 0.94 | 1.02 | 11.80 | 1.00 | 1.08 |
| 8895 | – | – | – | – | – | – |
| 8896 | – | – | – | – | – | – |
| 8897 | -18.72 | 0.95 | 1.03 | 11.86 | 1.00 | 1.07 |
| 8898 | -18.20 | 0.98 | 1.05 | 12.17 | 1.02 | 1.06 |
| 8899 | -16.85 | 1.02 | 1.08 | 13.09 | 1.04 | 1.03 |
| 8900 | -16.70 | 1.03 | 1.08 | 13.19 | 1.04 | 1.03 |
| 8901 | -16.56 | 1.03 | 1.08 | 13.29 | 1.04 | 1.03 |
| 8902 | -16.42 | 1.03 | 1.08 | 13.38 | 1.05 | 1.03 |
| 8903 | -16.28 | 1.03 | 1.08 | 13.47 | 1.05 | 1.03 |
| 8904 | -16.15 | 1.03 | 1.08 | 13.54 | 1.05 | 1.03 |
| 8905 | -16.03 | 1.03 | 1.08 | 13.60 | 1.05 | 1.03 |
| 8906 | -15.91 | 1.03 | 1.07 | 13.64 | 1.05 | 1.03 |
| 8907 | -15.81 | 1.03 | 1.07 | 13.65 | 1.05 | 1.03 |
| 8908 | -15.72 | 1.03 | 1.06 | 13.64 | 1.05 | 1.03 |
| 8909 | -15.64 | 1.02 | 1.06 | 13.59 | 1.05 | 1.03 |
| 8910 | -18.77 | 0.90 | 0.97 | 12.34 | 0.97 | 1.10 |
| 8911 | – | – | – | – | – | – |
| 8912 | – | – | – | – | – | – |
| 8913 | -18.65 | 0.91 | 0.98 | 12.45 | 0.98 | 1.09 |
| 8914 | -17.99 | 0.93 | 1.00 | 13.04 | 0.99 | 1.07 |
| 8915 | -16.47 | 0.97 | 1.02 | 14.38 | 1.01 | 1.05 |
| 8916 | -16.31 | 0.98 | 1.02 | 14.51 | 1.01 | 1.05 |
| 8917 | -16.16 | 0.98 | 1.02 | 14.63 | 1.02 | 1.05 |
| 8918 | -16.02 | 0.98 | 1.02 | 14.74 | 1.02 | 1.05 |
| 8919 | -15.87 | 0.98 | 1.02 | 14.85 | 1.02 | 1.05 |
| 8920 | -15.74 | 0.98 | 1.02 | 14.94 | 1.02 | 1.05 |
| 8921 | -15.61 | 0.98 | 1.02 | 15.01 | 1.02 | 1.05 |
| 8922 | -15.50 | 0.98 | 1.01 | 15.05 | 1.02 | 1.05 |
| 8923 | -15.39 | 0.98 | 1.01 | 15.07 | 1.02 | 1.05 |
| 8924 | -15.31 | 0.97 | 1.01 | 15.06 | 1.02 | 1.05 |
| 8925 | -15.24 | 0.97 | 1.00 | 15.01 | 1.01 | 1.05 |

[Table 658]

| 8926 | -18.79 | 0.86 | 0.93 | 12.74 | 0.94 | 1.12 |
|---|---|---|---|---|---|---|
| 8927 | – | – | – | – | – | – |
| 8928 | – | – | – | – | – | – |
| 8929 | -18.65 | 0.87 | 0.93 | 12.91 | 0.95 | 1.11 |
| 8930 | -17.88 | 0.89 | 0.95 | 13.76 | 0.96 | 1.09 |
| 8931 | -16.20 | 0.93 | 0.97 | 15.51 | 0.98 | 1.07 |
| 8932 | -16.04 | 0.93 | 0.97 | 15.67 | 0.99 | 1.07 |
| 8933 | -15.88 | 0.93 | 0.97 | 15.82 | 0.99 | 1.07 |
| 8934 | -15.73 | 0.93 | 0.97 | 15.96 | 0.99 | 1.07 |
| 8935 | -15.59 | 0.93 | 0.97 | 16.08 | 0.99 | 1.07 |
| 8936 | -15.45 | 0.93 | 0.97 | 16.18 | 0.99 | 1.07 |
| 8937 | -15.32 | 0.93 | 0.96 | 16.27 | 0.99 | 1.07 |
| 8938 | -15.20 | 0.93 | 0.96 | 16.32 | 0.99 | 1.07 |
| 8939 | -15.10 | 0.93 | 0.96 | 16.35 | 0.99 | 1.07 |
| 8940 | -15.02 | 0.92 | 0.95 | 16.34 | 0.99 | 1.07 |
| 8941 | -14.96 | 0.92 | 0.94 | 16.28 | 0.98 | 1.07 |
| 8942 | -18.90 | 0.82 | 0.88 | 12.97 | 0.92 | 1.14 |
| 8943 | – | – | – | – | – | – |
| 8944 | – | – | – | – | – | – |
| 8945 | -18.73 | 0.82 | 0.89 | 13.20 | 0.92 | 1.13 |
| 8946 | -17.85 | 0.85 | 0.90 | 14.32 | 0.93 | 1.12 |
| 8947 | -16.05 | 0.88 | 0.92 | 16.48 | 0.96 | 1.10 |
| 8948 | -15.88 | 0.88 | 0.92 | 16.67 | 0.96 | 1.09 |
| 8949 | -15.72 | 0.88 | 0.92 | 16.84 | 0.96 | 1.09 |
| 8950 | -15.56 | 0.88 | 0.92 | 17.00 | 0.96 | 1.09 |
| 8951 | -15.41 | 0.88 | 0.92 | 17.14 | 0.96 | 1.09 |
| 8952 | -15.27 | 0.88 | 0.91 | 17.27 | 0.96 | 1.09 |
| 8953 | -15.15 | 0.88 | 0.91 | 17.36 | 0.96 | 1.09 |
| 8954 | -15.03 | 0.88 | 0.91 | 17.43 | 0.96 | 1.10 |
| 8955 | -14.93 | 0.88 | 0.90 | 17.46 | 0.96 | 1.10 |
| 8956 | -14.86 | 0.88 | 0.90 | 17.44 | 0.96 | 1.10 |
| 8957 | -14.80 | 0.87 | 0.89 | 17.38 | 0.95 | 1.10 |
| 8958 | -19.10 | 0.78 | 0.84 | 13.03 | 0.89 | 1.15 |
| 8959 | – | – | – | – | – | – |
| 8960 | – | – | – | – | – | – |
| 8961 | -18.90 | 0.79 | 0.84 | 13.31 | 0.89 | 1.15 |
| 8962 | -17.93 | 0.81 | 0.86 | 14.70 | 0.91 | 1.14 |
| 8963 | -16.01 | 0.84 | 0.87 | 17.26 | 0.93 | 1.12 |
| 8964 | -15.83 | 0.84 | 0.87 | 17.47 | 0.93 | 1.12 |
| 8965 | -15.67 | 0.84 | 0.87 | 17.67 | 0.93 | 1.12 |
| 8966 | -15.51 | 0.84 | 0.87 | 17.86 | 0.93 | 1.12 |
| 8967 | -15.36 | 0.84 | 0.87 | 18.02 | 0.93 | 1.12 |
| 8968 | -15.22 | 0.84 | 0.87 | 18.16 | 0.93 | 1.12 |
| 8969 | -15.09 | 0.84 | 0.86 | 18.26 | 0.93 | 1.12 |
| 8970 | -14.98 | 0.84 | 0.86 | 18.34 | 0.93 | 1.12 |
| 8971 | -14.89 | 0.83 | 0.86 | 18.37 | 0.93 | 1.12 |
| 8972 | -14.82 | 0.83 | 0.85 | 18.35 | 0.93 | 1.12 |
| 8973 | -14.77 | 0.83 | 0.84 | 18.28 | 0.92 | 1.12 |
| 8974 | -19.40 | 0.74 | 0.79 | 12.88 | 0.86 | 1.17 |
| 8975 | – | – | – | – | – | – |

[Table 659]

| | | | | | | |
|---|---|---|---|---|---|---|
| 8976 | – | – | – | – | – | – |
| 8977 | -19.19 | 0.75 | 0.80 | 13.21 | 0.86 | 1.17 |
| 8978 | -18.11 | 0.77 | 0.81 | 14.86 | 0.88 | 1.16 |
| 8979 | -16.08 | 0.79 | 0.83 | 17.83 | 0.90 | 1.15 |
| 8980 | -15.90 | 0.79 | 0.83 | 18.07 | 0.90 | 1.15 |
| 8981 | -15.74 | 0.80 | 0.83 | 18.30 | 0.90 | 1.15 |
| 8982 | -15.57 | 0.80 | 0.82 | 18.50 | 0.90 | 1.15 |
| 8983 | -15.42 | 0.80 | 0.82 | 18.68 | 0.90 | 1.15 |
| 8984 | -15.28 | 0.79 | 0.82 | 18.84 | 0.90 | 1.15 |
| 8985 | -15.16 | 0.79 | 0.82 | 18.96 | 0.90 | 1.15 |
| 8986 | -15.05 | 0.79 | 0.81 | 19.04 | 0.90 | 1.15 |
| 8987 | -14.96 | 0.79 | 0.81 | 19.07 | 0.90 | 1.15 |
| 8988 | -14.90 | 0.79 | 0.80 | 19.05 | 0.90 | 1.15 |
| 8989 | -14.86 | 0.78 | 0.80 | 18.96 | 0.89 | 1.15 |
| 8990 | -19.83 | 0.70 | 0.75 | 12.49 | 0.82 | 1.19 |
| 8991 | – | – | – | – | – | – |
| 8992 | – | – | – | – | – | – |
| 8993 | -19.59 | 0.71 | 0.76 | 12.88 | 0.83 | 1.19 |
| 8994 | -18.42 | 0.73 | 0.77 | 14.79 | 0.85 | 1.18 |
| 8995 | -16.28 | 0.75 | 0.78 | 18.16 | 0.87 | 1.17 |
| 8996 | -16.09 | 0.75 | 0.78 | 18.43 | 0.87 | 1.17 |
| 8997 | -15.92 | 0.75 | 0.78 | 18.68 | 0.88 | 1.17 |
| 8998 | -15.75 | 0.75 | 0.78 | 18.91 | 0.88 | 1.17 |
| 8999 | -15.60 | 0.75 | 0.78 | 19.11 | 0.88 | 1.17 |
| 9000 | -15.46 | 0.75 | 0.78 | 19.28 | 0.88 | 1.17 |
| 9001 | -15.34 | 0.75 | 0.77 | 19.41 | 0.88 | 1.18 |
| 9002 | -15.23 | 0.75 | 0.77 | 19.49 | 0.88 | 1.18 |
| 9003 | -15.15 | 0.75 | 0.77 | 19.53 | 0.87 | 1.18 |
| 9004 | -15.10 | 0.74 | 0.76 | 19.50 | 0.87 | 1.18 |
| 9005 | -15.08 | 0.74 | 0.75 | 19.40 | 0.87 | 1.18 |
| 9006 | -19.08 | 1.23 | 1.37 | 7.62 | 1.18 | 0.98 |
| 9007 | – | – | – | – | – | – |
| 9008 | – | – | – | – | – | – |
| 9009 | -19.21 | 1.24 | 1.38 | 7.32 | 1.19 | 0.97 |
| 9010 | -19.91 | 1.30 | 1.45 | 5.69 | 1.22 | 0.95 |
| 9011 | -20.15 | 1.38 | 1.53 | 4.20 | 1.26 | 0.93 |
| 9012 | -20.09 | 1.39 | 1.53 | 4.15 | 1.27 | 0.93 |
| 9013 | -20.02 | 1.39 | 1.53 | 4.12 | 1.27 | 0.93 |
| 9014 | -19.93 | 1.39 | 1.54 | 4.11 | 1.28 | 0.93 |
| 9015 | -19.83 | 1.40 | 1.54 | 4.10 | 1.28 | 0.93 |
| 9016 | -19.73 | 1.40 | 1.54 | 4.11 | 1.28 | 0.93 |
| 9017 | -19.61 | 1.40 | 1.54 | 4.11 | 1.29 | 0.93 |
| 9018 | -19.50 | 1.40 | 1.54 | 4.12 | 1.29 | 0.93 |
| 9019 | -19.38 | 1.40 | 1.53 | 4.13 | 1.29 | 0.94 |
| 9020 | -19.26 | 1.40 | 1.53 | 4.14 | 1.29 | 0.94 |
| 9021 | -19.14 | 1.40 | 1.52 | 4.13 | 1.29 | 0.94 |
| 9022 | -18.76 | 1.19 | 1.31 | 8.65 | 1.16 | 0.99 |
| 9023 | – | – | – | – | – | – |
| 9024 | – | – | – | – | – | – |
| 9025 | -18.85 | 1.20 | 1.32 | 8.41 | 1.16 | 0.99 |

[Table 660]

| | | | | | |
|---|---|---|---|---|---|
| 9026 | -19.30 | 1.25 | 1.38 | 7.07 | 1.19 | 0.97 |
| 9027 | -19.24 | 1.33 | 1.45 | 5.90 | 1.23 | 0.95 |
| 9028 | -19.17 | 1.33 | 1.46 | 5.87 | 1.24 | 0.95 |
| 9029 | -19.09 | 1.33 | 1.46 | 5.85 | 1.24 | 0.94 |
| 9030 | -18.99 | 1.34 | 1.46 | 5.85 | 1.24 | 0.94 |
| 9031 | -18.89 | 1.34 | 1.46 | 5.85 | 1.25 | 0.94 |
| 9032 | -18.78 | 1.34 | 1.46 | 5.86 | 1.25 | 0.94 |
| 9033 | -18.67 | 1.34 | 1.46 | 5.87 | 1.25 | 0.95 |
| 9034 | -18.56 | 1.35 | 1.46 | 5.88 | 1.26 | 0.95 |
| 9035 | -18.44 | 1.34 | 1.46 | 5.88 | 1.26 | 0.95 |
| 9036 | -18.33 | 1.34 | 1.45 | 5.88 | 1.26 | 0.95 |
| 9037 | -18.22 | 1.34 | 1.45 | 5.86 | 1.26 | 0.95 |
| 9038 | -18.47 | 1.14 | 1.26 | 9.64 | 1.14 | 1.01 |
| 9039 | — | — | — | — | — | — |
| 9040 | — | — | — | — | — | — |
| 9041 | -18.52 | 1.15 | 1.27 | 9.45 | 1.14 | 1.01 |
| 9042 | -18.72 | 1.20 | 1.32 | 8.43 | 1.17 | 0.99 |
| 9043 | -18.37 | 1.27 | 1.38 | 7.62 | 1.20 | 0.96 |
| 9044 | -18.28 | 1.28 | 1.38 | 7.61 | 1.21 | 0.96 |
| 9045 | -18.19 | 1.28 | 1.39 | 7.61 | 1.21 | 0.96 |
| 9046 | -18.08 | 1.28 | 1.39 | 7.61 | 1.21 | 0.96 |
| 9047 | -17.97 | 1.29 | 1.39 | 7.62 | 1.21 | 0.96 |
| 9048 | -17.87 | 1.29 | 1.39 | 7.64 | 1.22 | 0.96 |
| 9049 | -17.75 | 1.29 | 1.39 | 7.65 | 1.22 | 0.96 |
| 9050 | -17.64 | 1.29 | 1.39 | 7.66 | 1.22 | 0.96 |
| 9051 | -17.53 | 1.29 | 1.38 | 7.67 | 1.22 | 0.96 |
| 9052 | -17.42 | 1.28 | 1.38 | 7.66 | 1.22 | 0.96 |
| 9053 | -17.32 | 1.28 | 1.37 | 7.63 | 1.22 | 0.96 |
| 9054 | -18.21 | 1.10 | 1.21 | 10.56 | 1.11 | 1.03 |
| 9055 | — | — | — | — | — | — |
| 9056 | — | — | — | — | — | — |
| 9057 | -18.22 | 1.11 | 1.22 | 10.43 | 1.12 | 1.03 |
| 9058 | -18.21 | 1.16 | 1.26 | **9.71** | 1.14 | 1.00 |
| 9059 | -17.56 | 1.22 | 1.31 | 9.32 | 1.17 | 0.98 |
| 9060 | -17.46 | 1.22 | 1.31 | 9.33 | 1.18 | 0.98 |
| 9061 | -17.35 | 1.22 | 1.32 | 9.35 | 1.18 | 0.97 |
| 9062 | -17.23 | 1.23 | 1.32 | 9.37 | 1.18 | 0.97 |
| 9063 | -17.12 | 1.23 | 1.32 | 9.40 | 1.18 | 0.97 |
| 9064 | -17.00 | 1.23 | 1.32 | 9.42 | 1.18 | 0.97 |
| 9065 | -16.89 | 1.23 | 1.32 | 9.45 | 1.19 | 0.97 |
| 9066 | -16.77 | 1.23 | 1.31 | 9.46 | 1.19 | 0.97 |
| 9067 | -16.66 | 1.23 | 1.31 | 9.46 | 1.19 | 0.98 |
| 9068 | -16.56 | 1.23 | 1.31 | 9.45 | 1.19 | 0.98 |
| 9069 | -16.46 | 1.22 | 1.30 | 9.42 | 1.19 | 0.98 |
| 9070 | -17.99 | 1.05 | 1.16 | 11.43 | 1.09 | 1.05 |
| 9071 | — | — | — | — | — | — |
| 9072 | — | — | — | — | — | — |
| 9073 | -17.97 | 1.06 | 1.16 | 11.35 | 1.09 | 1.05 |
| 9074 | -17.74 | 1.11 | 1.20 | 10.98 | 1.11 | 1.02 |
| 9075 | -16.83 | 1.16 | 1.25 | 10.97 | 1.14 | 0.99 |

[Table 661]

| | | | | | | |
|---|---|---|---|---|---|---|
| 9076 | -16.71 | 1.17 | 1.25 | 11.01 | 1.14 | 0.99 |
| 9077 | -16.59 | 1.17 | 1.25 | 11.05 | 1.15 | 0.99 |
| 9078 | -16.46 | 1.17 | 1.25 | 11.09 | 1.15 | 0.99 |
| 9079 | -16.34 | 1.17 | 1.25 | 11.13 | 1.15 | 0.99 |
| 9080 | -16.22 | 1.18 | 1.25 | 11.17 | 1.15 | 0.99 |
| 9081 | -16.10 | 1.18 | 1.25 | 11.20 | 1.15 | 0.99 |
| 9082 | -15.98 | 1.18 | 1.24 | 11.22 | 1.15 | 0.99 |
| 9083 | -15.87 | 1.17 | 1.24 | 11.23 | 1.16 | 0.99 |
| 9084 | -15.77 | 1.17 | 1.24 | 11.22 | 1.16 | 0.99 |
| 9085 | -15.68 | 1.17 | 1.23 | 11.18 | 1.15 | 0.99 |
| 9086 | -17.81 | 1.01 | 1.11 | 12.21 | 1.07 | 1.07 |
| 9087 | – | – | – | – | – | – |
| 9088 | – | – | – | – | – | – |
| 9089 | -17.76 | 1.02 | 1.11 | 12.19 | 1.07 | 1.07 |
| 9090 | -17.34 | 1.06 | 1.15 | 12.15 | 1.09 | 1.04 |
| 9091 | -16.20 | 1.11 | 1.18 | 12.55 | 1.11 | 1.01 |
| 9092 | -16.06 | 1.11 | 1.18 | 12.62 | 1.11 | 1.01 |
| 9093 | -15.93 | 1.12 | 1.18 | 12.68 | 1.12 | 1.01 |
| 9094 | -15.79 | 1.12 | 1.18 | 12.75 | 1.12 | 1.01 |
| 9095 | -15.66 | 1.12 | 1.18 | 12.81 | 1.12 | 1.01 |
| 9096 | -15.53 | 1.12 | 1.18 | 12.86 | 1.12 | 1.01 |
| 9097 | -15.40 | 1.12 | 1.18 | 12.90 | 1.12 | 1.01 |
| 9098 | -15.28 | 1.12 | 1.18 | 12.93 | 1.12 | 1.01 |
| 9099 | -15.18 | 1.12 | 1.18 | 12.94 | 1.12 | 1.01 |
| 9100 | -15.08 | 1.12 | 1.17 | 12.92 | 1.12 | 1.01 |
| 9101 | -14.99 | 1.11 | 1.16 | 12.88 | 1.12 | 1.01 |
| 9102 | -17.69 | 0.97 | 1.06 | **12.89** | 1.04 | 1.09 |
| 9103 | – | – | – | – | – | – |
| 9104 | – | – | – | – | – | – |
| 9105 | -17.60 | 0.98 | 1.06 | 12.93 | 1.04 | 1.09 |
| 9106 | -17.01 | 1.01 | 1.09 | 13.21 | 1.06 | 1.06 |
| 9107 | -15.66 | 1.06 | 1.12 | 14.03 | 1.08 | 1.03 |
| 9108 | -15.52 | 1.06 | 1.12 | 14.13 | 1.09 | 1.03 |
| 9109 | -15.37 | 1.07 | 1.12 | 14.22 | 1.09 | 1.03 |
| 9110 | -15.23 | 1.07 | 1.12 | 14.31 | 1.09 | 1.03 |
| 9111 | -15.09 | 1.07 | 1.12 | 14.38 | 1.09 | 1.03 |
| 9112 | -14.95 | 1.07 | 1.12 | 14.45 | 1.09 | 1.03 |
| 9113 | -14.82 | 1.07 | 1.12 | 14.51 | 1.09 | 1.03 |
| 9114 | -14.70 | 1.07 | 1.12 | 14.54 | 1.09 | 1.03 |
| 9115 | -14.60 | 1.07 | 1.11 | 14.56 | 1.09 | 1.03 |
| 9116 | -14.50 | 1.06 | 1.11 | 14.54 | 1.09 | 1.03 |
| 9117 | -14.42 | 1.06 | 1.10 | 14.50 | 1.09 | 1.03 |
| 9118 | -17.61 | 0.93 | 1.01 | 13.46 | 1.02 | 1.11 |
| 9119 | – | – | – | – | – | – |
| 9120 | – | – | – | – | – | – |
| 9121 | -17.50 | 0.94 | 1.02 | 13.55 | 1.02 | 1.11 |
| 9122 | -16.75 | 0.97 | 1.04 | 14.16 | 1.03 | 1.08 |
| 9123 | -15.23 | 1.01 | 1.07 | 15.40 | 1.06 | 1.05 |
| 9124 | -15.08 | 1.01 | 1.07 | 15.52 | 1.06 | 1.05 |
| 9125 | -14.93 | 1.02 | 1.07 | 15.64 | 1.06 | 1.05 |

[Table 662]

| | | | | | | |
|---|---|---|---|---|---|---|
| 9126 | -14.77 | 1.02 | 1.07 | 15.75 | 1.06 | 1.05 |
| 9127 | -14.63 | 1.02 | 1.06 | 15.84 | 1.06 | 1.05 |
| 9128 | -14.49 | 1.02 | 1.06 | 15.93 | 1.06 | 1.05 |
| 9129 | -14.36 | 1.02 | 1.06 | 15.99 | 1.06 | 1.05 |
| 9130 | -14.24 | 1.02 | 1.06 | 16.04 | 1.06 | 1.05 |
| 9131 | -14.13 | 1.01 | 1.05 | 16.06 | 1.06 | 1.05 |
| 9132 | -14.04 | 1.01 | 1.05 | 16.04 | 1.06 | 1.05 |
| 9133 | -13.96 | 1.01 | 1.04 | 15.99 | 1.06 | 1.05 |
| 9134 | -17.60 | 0.89 | 0.97 | 13.89 | 0.99 | 1.13 |
| 9135 | — | — | — | — | — | — |
| 9136 | — | — | — | — | — | — |
| 9137 | -17.47 | 0.89 | 0.97 | 14.05 | 0.99 | 1.13 |
| 9138 | -16.58 | 0.93 | 0.99 | 14.98 | 1.01 | 1.10 |
| 9139 | -14.92 | 0.96 | 1.01 | 16.62 | 1.03 | 1.08 |
| 9140 | -14.75 | 0.96 | 1.01 | 16.77 | 1.03 | 1.08 |
| 9141 | -14.59 | 0.97 | 1.01 | 16.91 | 1.03 | 1.07 |
| 9142 | -14.44 | 0.97 | 1.01 | 17.04 | 1.03 | 1.07 |
| 9143 | -14.29 | 0.97 | 1.01 | 17.16 | 1.03 | 1.07 |
| 9144 | -14.15 | 0.97 | 1.01 | 17.26 | 1.03 | 1.07 |
| 9145 | -14.02 | 0.97 | 1.01 | 17.34 | 1.03 | 1.07 |
| 9146 | -13.90 | 0.97 | 1.00 | 17.39 | 1.03 | 1.07 |
| 9147 | -13.79 | 0.96 | 1.00 | 17.42 | 1.03 | 1.07 |
| 9148 | -13.71 | 0.96 | 0.99 | 17.40 | 1.03 | 1.08 |
| 9149 | -13.64 | 0.96 | 0.99 | 17.34 | 1.03 | 1.08 |
| 9150 | -17.67 | 0.85 | 0.92 | 14.18 | 0.96 | 1.15 |
| 9151 | — | — | — | — | — | — |
| 9152 | — | — | — | — | — | — |
| 9153 | -17.51 | 0.86 | 0.93 | 14.39 | 0.97 | 1.15 |
| 9154 | -16.49 | 0.88 | 0.95 | 15.64 | 0.98 | 1.13 |
| 9155 | -14.71 | 0.92 | 0.96 | 17.68 | 1.00 | 1.10 |
| 9156 | -14.54 | 0.92 | 0.96 | 17.86 | 1.00 | 1.10 |
| 9157 | -14.37 | 0.92 | 0.96 | 18.03 | 1.00 | 1.10 |
| 9158 | -14.22 | 0.92 | 0.96 | 18.18 | 1.00 | 1.10 |
| 9159 | -14.07 | 0.92 | 0.96 | 18.32 | 1.00 | 1.10 |
| 9160 | -13.93 | 0.92 | 0.96 | 18.43 | 1.00 | 1.10 |
| 9161 | -13.80 | 0.92 | 0.95 | 18.52 | 1.00 | 1.10 |
| 9162 | -13.68 | 0.92 | 0.95 | 18.59 | 1.00 | 1.10 |
| 9163 | -13.58 | 0.92 | 0.95 | 18.61 | 1.00 | 1.10 |
| 9164 | -13.49 | 0.91 | 0.94 | 18.60 | 1.00 | 1.10 |
| 9165 | -13.43 | 0.91 | 0.93 | 18.53 | 1.00 | 1.10 |
| 9166 | -17.81 | 0.81 | 0.88 | 14.29 | 0.94 | 1.17 |
| 9167 | — | — | — | — | — | — |
| 9168 | — | — | — | — | — | — |
| 9169 | -17.63 | 0.82 | 0.88 | 14.56 | 0.94 | 1.17 |
| 9170 | -16.50 | 0.84 | 0.90 | 16.12 | 0.96 | 1.15 |
| 9171 | -14.61 | 0.87 | 0.91 | 18.57 | 0.97 | 1.13 |
| 9172 | -14.44 | 0.87 | 0.91 | 18.77 | 0.98 | 1.13 |
| 9173 | -14.27 | 0.87 | 0.91 | 18.97 | 0.98 | 1.13 |
| 9174 | -14.11 | 0.87 | 0.91 | 19.14 | 0.98 | 1.12 |
| 9175 | -13.96 | 0.87 | 0.91 | 19.30 | 0.98 | 1.12 |

[Table 663]

696

| 9176 | -13.82 | 0.87 | 0.91 | 19.43 | 0.98 | 1.12 |
|------|--------|------|------|-------|------|------|
| 9177 | -13.69 | 0.87 | 0.90 | 19.53 | 0.98 | 1.13 |
| 9178 | -13.57 | 0.87 | 0.90 | 19.60 | 0.98 | 1.13 |
| 9179 | -13.48 | 0.87 | 0.90 | 19.63 | 0.97 | 1.13 |
| 9180 | -13.40 | 0.87 | 0.89 | 19.61 | 0.97 | 1.13 |
| 9181 | -13.35 | 0.86 | 0.88 | 19.53 | 0.97 | 1.13 |
| 9182 | -18.06 | 0.77 | 0.84 | 14.21 | 0.91 | 1.19 |
| 9183 | – | – | – | – | – | – |
| 9184 | – | – | – | – | – | – |
| 9185 | -17.85 | 0.78 | 0.84 | 14.53 | 0.91 | 1.19 |
| 9186 | -16.61 | 0.80 | 0.86 | 16.41 | 0.93 | 1.17 |
| 9187 | -14.62 | 0.83 | 0.87 | 19.25 | 0.95 | 1.15 |
| 9188 | -14.44 | 0.83 | 0.87 | 19.49 | 0.95 | 1.15 |
| 9189 | -14.27 | 0.83 | 0.87 | 19.70 | 0.95 | 1.15 |
| 9190 | -14.11 | 0.83 | 0.87 | 19.90 | 0.95 | 1.15 |
| 9191 | -13.96 | 0.83 | 0.86 | 20.07 | 0.95 | 1.15 |
| 9192 | -13.82 | 0.83 | 0.86 | 20.22 | 0.95 | 1.15 |
| 9193 | -13.69 | 0.83 | 0.86 | 20.33 | 0.95 | 1.15 |
| 9194 | -13.58 | 0.83 | 0.85 | 20.41 | 0.95 | 1.15 |
| 9195 | -13.49 | 0.82 | 0.85 | 20.44 | 0.95 | 1.15 |
| 9196 | -13.42 | 0.82 | 0.84 | 20.41 | 0.94 | 1.16 |
| 9197 | -13.38 | 0.82 | 0.84 | 20.33 | 0.94 | 1.16 |
| 9198 | -23.57 | 1.04 | 1.13 | 4.51 | 0.98 | 0.96 |
| 9199 | – | – | – | – | – | – |
| 9200 | – | – | – | – | – | – |
| 9201 | -23.67 | 1.05 | 1.14 | 4.27 | 0.98 | 0.96 |
| 9202 | -24.07 | 1.08 | 1.17 | 3.32 | 1.00 | 0.95 |
| 9203 | -24.45 | 1.15 | 1.24 | 1.82 | 1.04 | 0.93 |
| 9204 | -24.41 | 1.15 | 1.24 | 1.76 | 1.04 | 0.93 |
| 9205 | -24.37 | 1.15 | 1.24 | 1.71 | 1.05 | 0.93 |
| 9206 | -24.32 | 1.15 | 1.25 | 1.68 | 1.05 | 0.93 |
| 9207 | -24.26 | 1.16 | 1.25 | 1.65 | 1.05 | 0.93 |
| 9208 | -24.19 | 1.16 | 1.25 | 1.63 | 1.05 | 0.93 |
| 9209 | -24.11 | 1.16 | 1.24 | 1.61 | 1.06 | 0.93 |
| 9210 | -24.04 | 1.16 | 1.24 | 1.59 | 1.06 | 0.93 |
| 9211 | -23.96 | 1.16 | 1.24 | 1.56 | 1.06 | 0.93 |
| 9212 | -23.88 | 1.16 | 1.24 | 1.53 | 1.06 | 0.94 |
| 9213 | -23.81 | 1.15 | 1.23 | 1.49 | 1.06 | 0.94 |
| 9214 | -23.45 | 1.00 | 1.07 | 5.27 | 0.95 | 0.97 |
| 9215 | – | – | – | – | – | – |
| 9216 | – | – | – | – | – | – |
| 9217 | -23.52 | 1.00 | 1.08 | 5.09 | 0.95 | 0.97 |
| 9218 | -23.76 | 1.03 | 1.11 | 4.36 | 0.97 | 0.96 |
| 9219 | -23.83 | 1.09 | 1.17 | 3.24 | 1.01 | 0.94 |
| 9220 | -23.78 | 1.10 | 1.17 | 3.20 | 1.01 | 0.94 |
| 9221 | -23.73 | 1.10 | 1.18 | 3.17 | 1.01 | 0.94 |
| 9222 | -23.67 | 1.10 | 1.18 | 3.14 | 1.02 | 0.94 |
| 9223 | -23.60 | 1.10 | 1.18 | 3.12 | 1.02 | 0.94 |
| 9224 | -23.53 | 1.11 | 1.18 | 3.10 | 1.02 | 0.94 |
| 9225 | -23.46 | 1.11 | 1.18 | 3.09 | 1.02 | 0.94 |

[Table 664]

| | | | | | | |
|---|---|---|---|---|---|---|
| 9226 | -23.38 | 1.11 | 1.18 | 3.07 | 1.02 | 0.94 |
| 9227 | -23.31 | 1.10 | 1.17 | 3.04 | 1.02 | 0.94 |
| 9228 | -23.24 | 1.10 | 1.17 | 3.01 | 1.02 | 0.95 |
| 9229 | -23.17 | 1.10 | 1.16 | 2.96 | 1.02 | 0.95 |
| 9230 | -23.39 | 0.95 | 1.02 | 5.97 | 0.92 | 0.99 |
| 9231 | — | — | — | — | — | — |
| 9232 | — | — | — | — | — | — |
| 9233 | -23.41 | 0.96 | 1.03 | 5.84 | 0.93 | 0.98 |
| 9234 | -23.49 | 0.99 | 1.06 | 5.35 | 0.94 | 0.97 |
| 9235 | -23.26 | 1.04 | 1.11 | 4.65 | 0.98 | 0.95 |
| 9236 | -23.20 | 1.05 | 1.11 | 4.63 | 0.98 | 0.95 |
| 9237 | -23.13 | 1.05 | 1.11 | 4.61 | 0.98 | 0.95 |
| 9238 | -23.06 | 1.05 | 1.11 | 4.61 | 0.98 | 0.95 |
| 9239 | -22.98 | 1.05 | 1.11 | 4.60 | 0.98 | 0.95 |
| 9240 | -22.91 | 1.05 | 1.11 | 4.59 | 0.99 | 0.95 |
| 9241 | -22.83 | 1.05 | 1.11 | 4.58 | 0.99 | 0.95 |
| 9242 | -22.75 | 1.05 | 1.11 | 4.57 | 0.99 | 0.95 |
| 9243 | -22.68 | 1.05 | 1.10 | 4.54 | 0.99 | 0.95 |
| 9244 | -22.62 | 1.05 | 1.10 | 4.51 | 0.99 | 0.96 |
| 9245 | -22.55 | 1.05 | 1.10 | 4.45 | 0.99 | 0.96 |
| 9246 | -23.37 | 0.91 | 0.97 | 6.57 | 0.89 | 1.00 |
| 9247 | — | — | — | — | — | — |
| 9248 | — | — | — | — | — | — |
| 9249 | -23.36 | 0.91 | 0.98 | 6.51 | 0.90 | 1.00 |
| 9250 | -23.28 | 0.94 | 1.00 | 6.25 | 0.91 | 0.99 |
| 9251 | -22.75 | 0.99 | 1.04 | 6.01 | 0.94 | 0.97 |
| 9252 | -22.67 | 1.00 | 1.05 | 6.02 | 0.95 | 0.97 |
| 9253 | -22.59 | 1.00 | 1.05 | 6.03 | 0.95 | 0.97 |
| 9254 | -22.50 | 1.00 | 1.05 | 6.04 | 0.95 | 0.96 |
| 9255 | -22.42 | 1.00 | 1.05 | 6.05 | 0.95 | 0.96 |
| 9256 | -22.33 | 1.00 | 1.05 | 6.06 | 0.95 | 0.96 |
| 9257 | -22.25 | 1.00 | 1.05 | 6.06 | 0.95 | 0.97 |
| 9258 | -22.17 | 1.00 | 1.04 | 6.05 | 0.95 | 0.97 |
| 9259 | -22.10 | 1.00 | 1.04 | 6.03 | 0.95 | 0.97 |
| 9260 | -22.04 | 1.00 | 1.04 | 5.99 | 0.95 | 0.97 |
| 9261 | -21.98 | 1.00 | 1.03 | 5.94 | 0.95 | 0.97 |
| 9262 | -23.41 | 0.87 | 0.92 | 7.08 | 0.86 | 1.02 |
| 9263 | — | — | — | — | — | — |
| 9264 | — | — | — | — | — | — |
| 9265 | -23.36 | 0.87 | 0.93 | 7.08 | 0.87 | 1.01 |
| 9266 | -23.14 | 0.90 | 0.95 | 7.07 | 0.88 | 1.00 |
| 9267 | -22.33 | 0.94 | 0.98 | 7.29 | 0.91 | 0.98 |
| 9268 | -22.23 | 0.95 | 0.99 | 7.33 | 0.91 | 0.98 |
| 9269 | -22.13 | 0.95 | 0.99 | 7.37 | 0.91 | 0.98 |
| 9270 | -22.03 | 0.95 | 0.99 | 7.41 | 0.92 | 0.98 |
| 9271 | -21.94 | 0.95 | 0.99 | 7.44 | 0.92 | 0.98 |
| 9272 | -21.85 | 0.95 | 0.99 | 7.46 | 0.92 | 0.98 |
| 9273 | -21.76 | 0.95 | 0.98 | 7.48 | 0.92 | 0.98 |
| 9274 | -21.68 | 0.95 | 0.98 | 7.48 | 0.92 | 0.98 |
| 9275 | -21.60 | 0.95 | 0.98 | 7.46 | 0.92 | 0.98 |

[Table 665]

| | | | | | | |
|------|--------|------|------|-------|------|------|
| 9276 | -21.53 | 0.95 | 0.97 | 7.43 | 0.92 | 0.98 |
| 9277 | -21.48 | 0.94 | 0.97 | 7.37 | 0.92 | 0.98 |
| 9278 | -23.52 | 0.82 | 0.87 | 7.46 | 0.83 | 1.03 |
| 9279 | — | — | — | — | — | — |
| 9280 | — | — | — | — | — | — |
| 9281 | -23.43 | 0.83 | 0.88 | 7.52 | 0.84 | 1.03 |
| 9282 | -23.08 | 0.85 | 0.90 | 7.76 | 0.85 | 1.01 |
| 9283 | -22.00 | 0.89 | 0.93 | 8.47 | 0.88 | 1.00 |
| 9284 | -21.89 | 0.90 | 0.93 | 8.54 | 0.88 | 0.99 |
| 9285 | -21.78 | 0.90 | 0.93 | 8.61 | 0.88 | 0.99 |
| 9286 | -21.67 | 0.90 | 0.93 | 8.67 | 0.88 | 0.99 |
| 9287 | -21.56 | 0.90 | 0.93 | 8.72 | 0.88 | 0.99 |
| 9288 | -21.46 | 0.90 | 0.93 | 8.77 | 0.88 | 0.99 |
| 9289 | -21.37 | 0.90 | 0.93 | 8.80 | 0.88 | 0.99 |
| 9290 | -21.28 | 0.90 | 0.92 | 8.81 | 0.88 | 0.99 |
| 9291 | -21.20 | 0.90 | 0.92 | 8.80 | 0.88 | 1.00 |
| 9292 | -21.14 | 0.90 | 0.91 | 8.77 | 0.88 | 1.00 |
| 9293 | -21.08 | 0.89 | 0.91 | 8.72 | 0.88 | 1.00 |
| 9294 | -23.70 | 0.78 | 0.82 | 7.71 | 0.80 | 1.04 |
| 9295 | — | — | — | — | — | — |
| 9296 | — | — | — | — | — | — |
| 9297 | -23.58 | 0.79 | 0.83 | 7.83 | 0.81 | 1.04 |
| 9298 | -23.10 | 0.81 | 0.85 | 8.31 | 0.82 | 1.03 |
| 9299 | -21.79 | 0.85 | 0.87 | 9.51 | 0.85 | 1.01 |
| 9300 | -21.66 | 0.85 | 0.87 | 9.61 | 0.85 | 1.01 |
| 9301 | -21.54 | 0.85 | 0.87 | 9.71 | 0.85 | 1.01 |
| 9302 | -21.42 | 0.85 | 0.87 | 9.80 | 0.85 | 1.01 |
| 9303 | -21.30 | 0.85 | 0.87 | 9.88 | 0.85 | 1.01 |
| 9304 | -21.20 | 0.85 | 0.87 | 9.93 | 0.85 | 1.01 |
| 9305 | -21.10 | 0.85 | 0.87 | 9.98 | 0.85 | 1.01 |
| 9306 | -21.00 | 0.85 | 0.87 | 10.01 | 0.85 | 1.01 |
| 9307 | -20.93 | 0.85 | 0.86 | 10.01 | 0.85 | 1.01 |
| 9308 | -20.86 | 0.85 | 0.86 | 9.99 | 0.85 | 1.01 |
| 9309 | -20.81 | 0.84 | 0.85 | 9.93 | 0.85 | 1.01 |
| 9310 | -23.97 | 0.74 | 0.77 | 7.80 | 0.77 | 1.05 |
| 9311 | — | — | — | — | — | — |
| 9312 | — | — | — | — | — | — |
| 9313 | -23.83 | 0.75 | 0.78 | 7.98 | 0.77 | 1.05 |
| 9314 | -23.22 | 0.77 | 0.80 | 8.70 | 0.79 | 1.04 |
| 9315 | -21.70 | 0.80 | 0.82 | 10.37 | 0.81 | 1.03 |
| 9316 | -21.56 | 0.80 | 0.82 | 10.51 | 0.81 | 1.03 |
| 9317 | -21.43 | 0.80 | 0.82 | 10.64 | 0.82 | 1.03 |
| 9318 | -21.30 | 0.80 | 0.82 | 10.76 | 0.82 | 1.03 |
| 9319 | -21.18 | 0.81 | 0.82 | 10.86 | 0.82 | 1.03 |
| 9320 | -21.06 | 0.81 | 0.82 | 10.94 | 0.82 | 1.03 |
| 9321 | -20.96 | 0.80 | 0.82 | 11.00 | 0.82 | 1.03 |
| 9322 | -20.86 | 0.80 | 0.81 | 11.04 | 0.82 | 1.03 |
| 9323 | -20.78 | 0.80 | 0.81 | 11.05 | 0.82 | 1.03 |
| 9324 | -20.72 | 0.80 | 0.80 | 11.04 | 0.82 | 1.03 |
| 9325 | -20.67 | 0.80 | 0.80 | 10.99 | 0.81 | 1.03 |

[Table 666]

| | | | | | | |
|---|---|---|---|---|---|---|
| 9326 | -24.36 | 0.70 | 0.73 | 7.70 | 0.73 | 1.06 |
| 9327 | — | — | — | — | — | — |
| 9328 | — | — | — | — | — | — |
| 9329 | -24.18 | 0.70 | 0.73 | 7.95 | 0.74 | 1.06 |
| 9330 | -23.46 | 0.72 | 0.75 | 8.91 | 0.75 | 1.06 |
| 9331 | -21.75 | 0.76 | 0.77 | 11.04 | 0.78 | 1.05 |
| 9332 | -21.60 | 0.76 | 0.77 | 11.22 | 0.78 | 1.05 |
| 9333 | -21.45 | 0.76 | 0.77 | 11.37 | 0.78 | 1.05 |
| 9334 | -21.31 | 0.76 | 0.77 | 11.52 | 0.78 | 1.05 |
| 9335 | -21.19 | 0.76 | 0.77 | 11.64 | 0.79 | 1.05 |
| 9336 | -21.06 | 0.76 | 0.77 | 11.75 | 0.79 | 1.05 |
| 9337 | -20.96 | 0.76 | 0.76 | 11.83 | 0.79 | 1.05 |
| 9338 | -20.86 | 0.76 | 0.76 | 11.88 | 0.79 | 1.05 |
| 9339 | -20.78 | 0.76 | 0.76 | 11.90 | 0.78 | 1.05 |
| 9340 | -20.72 | 0.75 | 0.75 | 11.89 | 0.78 | 1.05 |
| 9341 | -20.67 | 0.75 | 0.75 | 11.84 | 0.78 | 1.05 |
| 9342 | -24.87 | 0.66 | 0.68 | 7.40 | 0.70 | 1.07 |
| 9343 | — | — | — | — | — | — |
| 9344 | — | — | — | — | — | — |
| 9345 | -24.66 | 0.66 | 0.68 | 7.71 | 0.70 | 1.07 |
| 9346 | -23.83 | 0.68 | 0.70 | 8.89 | 0.72 | 1.07 |
| 9347 | -21.94 | 0.71 | 0.72 | 11.49 | 0.75 | 1.06 |
| 9348 | -21.77 | 0.71 | 0.72 | 11.69 | 0.75 | 1.06 |
| 9349 | -21.62 | 0.71 | 0.72 | 11.88 | 0.75 | 1.06 |
| 9350 | -21.48 | 0.71 | 0.72 | 12.05 | 0.75 | 1.06 |
| 9351 | -21.34 | 0.71 | 0.72 | 12.20 | 0.75 | 1.07 |
| 9352 | -21.22 | 0.71 | 0.72 | 12.32 | 0.75 | 1.07 |
| 9353 | -21.11 | 0.71 | 0.72 | 12.42 | 0.75 | 1.07 |
| 9354 | -21.01 | 0.71 | 0.71 | 12.48 | 0.75 | 1.07 |
| 9355 | -20.93 | 0.71 | 0.71 | 12.51 | 0.75 | 1.07 |
| 9356 | -20.87 | 0.71 | 0.71 | 12.51 | 0.75 | 1.07 |
| 9357 | -20.83 | 0.70 | 0.70 | 12.45 | 0.75 | 1.07 |
| 9358 | -25.53 | 0.62 | 0.63 | 6.89 | 0.66 | 1.07 |
| 9359 | — | — | — | — | — | — |
| 9360 | — | — | — | — | — | — |
| 9361 | -25.28 | 0.62 | 0.64 | 7.25 | 0.66 | 1.07 |
| 9362 | -24.35 | 0.64 | 0.65 | 8.65 | 0.68 | 1.08 |
| 9363 | -22.28 | 0.67 | 0.67 | 11.68 | 0.71 | 1.08 |
| 9364 | -22.10 | 0.67 | 0.67 | 11.91 | 0.72 | 1.08 |
| 9365 | -21.94 | 0.67 | 0.67 | 12.13 | 0.72 | 1.08 |
| 9366 | -21.79 | 0.67 | 0.67 | 12.32 | 0.72 | 1.08 |
| 9367 | -21.65 | 0.67 | 0.67 | 12.49 | 0.72 | 1.08 |
| 9368 | -21.52 | 0.67 | 0.67 | 12.63 | 0.72 | 1.09 |
| 9369 | -21.41 | 0.67 | 0.67 | 12.75 | 0.72 | 1.09 |
| 9370 | -21.31 | 0.67 | 0.67 | 12.82 | 0.72 | 1.09 |
| 9371 | -21.23 | 0.67 | 0.66 | 12.86 | 0.72 | 1.09 |
| 9372 | -21.17 | 0.66 | 0.66 | 12.85 | 0.72 | 1.09 |
| 9373 | -21.14 | 0.66 | 0.65 | 12.80 | 0.71 | 1.09 |
| 9374 | -26.37 | 0.58 | 0.59 | 6.14 | 0.61 | 1.07 |
| 9375 | — | — | — | — | — | — |

[Table 667]

| | | | | | |
|---|---|---|---|---|---|
| 9376 | — | — | — | — | — | — |
| 9377 | -26.09 | 0.58 | 0.59 | 6.55 | 0.62 | 1.08 |
| 9378 | -25.04 | 0.60 | 0.61 | 8.14 | 0.64 | 1.08 |
| 9379 | -22.78 | 0.63 | 0.63 | 11.57 | 0.68 | 1.10 |
| 9380 | -22.60 | 0.63 | 0.63 | 11.84 | 0.68 | 1.10 |
| 9381 | -22.42 | 0.63 | 0.63 | 12.08 | 0.68 | 1.10 |
| 9382 | -22.27 | 0.63 | 0.63 | 12.30 | 0.68 | 1.10 |
| 9383 | -22.12 | 0.63 | 0.63 | 12.49 | 0.69 | 1.10 |
| 9384 | -21.98 | 0.63 | 0.63 | 12.65 | 0.69 | 1.10 |
| 9385 | -21.87 | 0.63 | 0.62 | 12.77 | 0.69 | 1.11 |
| 9386 | -21.77 | 0.62 | 0.62 | 12.85 | 0.69 | 1.11 |
| 9387 | -21.70 | 0.62 | 0.62 | 12.90 | 0.69 | 1.11 |
| 9388 | -21.64 | 0.62 | 0.61 | 12.89 | 0.68 | 1.11 |
| 9389 | -21.62 | 0.62 | 0.61 | 12.83 | 0.68 | 1.11 |
| 9390 | -27.42 | 0.54 | 0.54 | 5.17 | 0.57 | 1.07 |
| 9391 | — | — | — | — | — | — |
| 9392 | — | — | — | — | — | — |
| 9393 | -27.11 | 0.54 | 0.54 | 5.61 | 0.57 | 1.07 |
| 9394 | -25.94 | 0.56 | 0.56 | 7.36 | 0.60 | 1.08 |
| 9395 | -23.47 | 0.58 | 0.58 | 11.15 | 0.64 | 1.11 |
| 9396 | -23.28 | 0.58 | 0.58 | 11.44 | 0.64 | 1.11 |
| 9397 | -23.09 | 0.59 | 0.58 | 11.70 | 0.65 | 1.11 |
| 9398 | -22.92 | 0.59 | 0.58 | 11.94 | 0.65 | 1.12 |
| 9399 | -22.77 | 0.59 | 0.58 | 12.15 | 0.65 | 1.12 |
| 9400 | -22.63 | 0.59 | 0.58 | 12.32 | 0.65 | 1.12 |
| 9401 | -22.51 | 0.58 | 0.58 | 12.45 | 0.65 | 1.13 |
| 9402 | -22.42 | 0.58 | 0.58 | 12.54 | 0.65 | 1.13 |
| 9403 | -22.34 | 0.58 | 0.57 | 12.58 | 0.65 | 1.13 |
| 9404 | -22.29 | 0.58 | 0.57 | 12.57 | 0.65 | 1.13 |
| 9405 | -22.27 | 0.57 | 0.56 | 12.50 | 0.64 | 1.13 |
| 9406 | -28.73 | 0.49 | 0.48 | 4.01 | 0.52 | 1.05 |
| 9407 | — | — | — | — | — | — |
| 9408 | — | — | — | — | — | — |
| 9409 | -28.38 | 0.50 | 0.49 | 4.47 | 0.52 | 1.06 |
| 9410 | -27.08 | 0.52 | 0.51 | 6.30 | 0.55 | 1.08 |
| 9411 | -24.38 | 0.54 | 0.54 | 10.36 | 0.60 | 1.12 |
| 9412 | -24.17 | 0.54 | 0.54 | 10.67 | 0.60 | 1.12 |
| 9413 | -23.97 | 0.54 | 0.54 | 10.95 | 0.61 | 1.13 |
| 9414 | -23.79 | 0.54 | 0.54 | 11.21 | 0.61 | 1.13 |
| 9415 | -23.63 | 0.54 | 0.54 | 11.42 | 0.61 | 1.13 |
| 9416 | -23.48 | 0.54 | 0.54 | 11.60 | 0.61 | 1.14 |
| 9417 | -23.36 | 0.54 | 0.54 | 11.74 | 0.61 | 1.14 |
| 9418 | -23.26 | 0.54 | 0.53 | 11.83 | 0.61 | 1.14 |
| 9419 | -23.19 | 0.54 | 0.53 | 11.86 | 0.61 | 1.15 |
| 9420 | -23.15 | 0.54 | 0.53 | 11.84 | 0.61 | 1.15 |
| 9421 | -23.14 | 0.53 | 0.52 | 11.76 | 0.61 | 1.15 |
| 9422 | -22.76 | 0.99 | 1.07 | 5.99 | 0.95 | 0.98 |
| 9423 | — | — | — | — | — | — |
| 9424 | -22.85 | 1.00 | 1.08 | 5.76 | 0.95 | 0.97 |
| 9425 | -23.43 | 1.05 | 1.13 | 4.31 | 0.98 | 0.95 |

[Table 668]

| 9426 | -24.04 | 1.12 | 1.21 | 2.44 | 1.03 | 0.94 |
|------|--------|------|------|------|------|------|
| 9427 | -24.04 | 1.12 | 1.21 | 2.33 | 1.03 | 0.94 |
| 9428 | -24.02 | 1.13 | 1.21 | 2.24 | 1.03 | 0.94 |
| 9429 | -24.00 | 1.13 | 1.22 | 2.17 | 1.03 | 0.94 |
| 9430 | -23.96 | 1.13 | 1.22 | 2.10 | 1.04 | 0.94 |
| 9431 | -23.92 | 1.14 | 1.22 | 2.04 | 1.04 | 0.94 |
| 9432 | -23.86 | 1.14 | 1.22 | 1.99 | 1.04 | 0.94 |
| 9433 | -23.80 | 1.14 | 1.22 | 1.95 | 1.04 | 0.94 |
| 9434 | -23.74 | 1.14 | 1.22 | 1.90 | 1.05 | 0.94 |
| 9435 | -23.68 | 1.14 | 1.21 | 1.84 | 1.05 | 0.94 |
| 9436 | -23.62 | 1.13 | 1.21 | 1.78 | 1.05 | 0.94 |
| 9437 | -22.84 | 0.94 | 1.02 | 6.50 | 0.92 | 0.99 |
| 9438 | — | — | — | — | — | — |
| 9439 | -22.89 | 0.95 | 1.02 | 6.33 | 0.92 | 0.99 |
| 9440 | -23.23 | 1.00 | 1.08 | 5.25 | 0.95 | 0.97 |
| 9441 | -23.47 | 1.07 | 1.14 | 3.84 | 0.99 | 0.95 |
| 9442 | -23.44 | 1.07 | 1.14 | 3.76 | 0.99 | 0.95 |
| 9443 | -23.41 | 1.07 | 1.15 | 3.70 | 1.00 | 0.95 |
| 9444 | -23.37 | 1.08 | 1.15 | 3.64 | 1.00 | 0.95 |
| 9445 | -23.32 | 1.08 | 1.15 | 3.59 | 1.00 | 0.95 |
| 9446 | -23.26 | 1.08 | 1.15 | 3.54 | 1.01 | 0.95 |
| 9447 | -23.21 | 1.08 | 1.15 | 3.50 | 1.01 | 0.95 |
| 9448 | -23.15 | 1.08 | 1.15 | 3.46 | 1.01 | 0.95 |
| 9449 | -23.09 | 1.08 | 1.15 | 3.41 | 1.01 | 0.95 |
| 9450 | -23.02 | 1.08 | 1.14 | 3.36 | 1.01 | 0.95 |
| 9451 | -22.97 | 1.08 | 1.14 | 3.30 | 1.01 | 0.95 |
| 9452 | -22.96 | 0.90 | 0.97 | 6.91 | 0.89 | 1.01 |
| 9453 | — | — | — | — | — | — |
| 9454 | -22.98 | 0.91 | 0.97 | 6.81 | 0.90 | 1.00 |
| 9455 | -23.07 | 0.95 | 1.02 | 6.10 | 0.92 | 0.98 |
| 9456 | -22.95 | 1.01 | 1.08 | 5.21 | 0.96 | 0.96 |
| 9457 | -22.90 | 1.02 | 1.08 | 5.17 | 0.96 | 0.96 |
| 9458 | -22.85 | 1.02 | 1.08 | 5.13 | 0.96 | 0.96 |
| 9459 | -22.79 | 1.02 | 1.08 | 5.10 | 0.97 | 0.96 |
| 9460 | -22.73 | 1.03 | 1.08 | 5.07 | 0.97 | 0.96 |
| 9461 | -22.66 | 1.03 | 1.08 | 5.04 | 0.97 | 0.96 |
| 9462 | -22.59 | 1.03 | 1.08 | 5.01 | 0.97 | 0.96 |
| 9463 | -22.53 | 1.03 | 1.08 | 4.98 | 0.97 | 0.96 |
| 9464 | -22.46 | 1.03 | 1.08 | 4.94 | 0.97 | 0.96 |
| 9465 | -22.40 | 1.03 | 1.08 | 4.89 | 0.97 | 0.96 |
| 9466 | -22.35 | 1.03 | 1.07 | 4.82 | 0.97 | 0.96 |
| 9467 | -23.14 | 0.86 | 0.92 | 7.22 | 0.86 | 1.02 |
| 9468 | — | — | — | — | — | — |
| 9469 | -23.11 | 0.87 | 0.92 | 7.18 | 0.87 | 1.02 |
| 9470 | -22.98 | 0.91 | 0.97 | 6.87 | 0.89 | 1.00 |
| 9471 | -22.51 | 0.96 | 1.01 | 6.51 | 0.92 | 0.98 |
| 9472 | -22.44 | 0.97 | 1.02 | 6.51 | 0.93 | 0.97 |
| 9473 | -22.36 | 0.97 | 1.02 | 6.50 | 0.93 | 0.97 |
| 9474 | -22.28 | 0.97 | 1.02 | 6.50 | 0.93 | 0.97 |
| 9475 | -22.21 | 0.97 | 1.02 | 6.49 | 0.93 | 0.97 |

[Table 669]

EP 4 442 787 A1

| | | | | | | |
|------|--------|------|------|-------|------|------|
| 9476 | -22.13 | 0.98 | 1.02 | 6.49 | 0.94 | 0.97 |
| 9477 | -22.05 | 0.98 | 1.02 | 6.48 | 0.94 | 0.97 |
| 9478 | -21.98 | 0.98 | 1.02 | 6.46 | 0.94 | 0.97 |
| 9479 | -21.91 | 0.98 | 1.01 | 6.43 | 0.94 | 0.97 |
| 9480 | -21.84 | 0.97 | 1.01 | 6.38 | 0.94 | 0.97 |
| 9481 | -21.79 | 0.97 | 1.01 | 6.32 | 0.94 | 0.97 |
| 9482 | -23.37 | 0.82 | 0.87 | 7.41 | 0.83 | 1.04 |
| 9483 | — | — | — | — | — | — |
| 9484 | -23.32 | 0.82 | 0.88 | 7.43 | 0.84 | 1.03 |
| 9485 | -22.96 | 0.86 | 0.91 | 7.52 | 0.86 | 1.01 |
| 9486 | -22.16 | 0.91 | 0.95 | 7.72 | 0.89 | 0.99 |
| 9487 | -22.07 | 0.92 | 0.96 | 7.75 | 0.89 | 0.99 |
| 9488 | -21.97 | 0.92 | 0.96 | 7.78 | 0.90 | 0.99 |
| 9489 | -21.87 | 0.92 | 0.96 | 7.81 | 0.90 | 0.99 |
| 9490 | -21.78 | 0.92 | 0.96 | 7.84 | 0.90 | 0.99 |
| 9491 | -21.69 | 0.92 | 0.96 | 7.86 | 0.90 | 0.99 |
| 9492 | -21.60 | 0.92 | 0.96 | 7.86 | 0.90 | 0.99 |
| 9493 | -21.52 | 0.92 | 0.95 | 7.86 | 0.90 | 0.99 |
| 9494 | -21.44 | 0.92 | 0.95 | 7.84 | 0.90 | 0.99 |
| 9495 | -21.38 | 0.92 | 0.95 | 7.81 | 0.90 | 0.99 |
| 9496 | -21.32 | 0.92 | 0.94 | 7.75 | 0.90 | 0.99 |
| 9497 | -23.68 | 0.78 | 0.82 | 7.45 | 0.80 | 1.05 |
| 9498 | — | — | — | — | — | — |
| 9499 | -23.58 | 0.78 | 0.83 | 7.55 | 0.81 | 1.05 |
| 9500 | -23.01 | 0.82 | 0.86 | 8.03 | 0.83 | 1.03 |
| 9501 | -21.92 | 0.86 | 0.90 | 8.80 | 0.86 | 1.01 |
| 9502 | -21.80 | 0.87 | 0.90 | 8.87 | 0.86 | 1.01 |
| 9503 | -21.69 | 0.87 | 0.90 | 8.94 | 0.86 | 1.00 |
| 9504 | -21.58 | 0.87 | 0.90 | 9.00 | 0.86 | 1.00 |
| 9505 | -21.47 | 0.87 | 0.90 | 9.06 | 0.87 | 1.00 |
| 9506 | -21.37 | 0.87 | 0.90 | 9.10 | 0.87 | 1.00 |
| 9507 | -21.27 | 0.87 | 0.90 | 9.13 | 0.87 | 1.00 |
| 9508 | -21.18 | 0.87 | 0.89 | 9.15 | 0.87 | 1.00 |
| 9509 | -21.10 | 0.87 | 0.89 | 9.14 | 0.87 | 1.00 |
| 9510 | -21.03 | 0.87 | 0.89 | 9.12 | 0.87 | 1.00 |
| 9511 | -20.97 | 0.87 | 0.88 | 9.07 | 0.86 | 1.00 |
| 9512 | -24.07 | 0.73 | 0.77 | 7.34 | 0.77 | 1.06 |
| 9513 | — | — | — | — | — | — |
| 9514 | -23.94 | 0.74 | 0.78 | 7.50 | 0.77 | 1.06 |
| 9515 | -23.16 | 0.78 | 0.81 | 8.39 | 0.80 | 1.04 |
| 9516 | -21.80 | 0.82 | 0.84 | 9.71 | 0.83 | 1.02 |
| 9517 | -21.66 | 0.82 | 0.84 | 9.83 | 0.83 | 1.02 |
| 9518 | -21.53 | 0.82 | 0.84 | 9.93 | 0.83 | 1.02 |
| 9519 | -21.41 | 0.82 | 0.84 | 10.02 | 0.83 | 1.02 |
| 9520 | -21.29 | 0.82 | 0.84 | 10.11 | 0.83 | 1.02 |
| 9521 | -21.17 | 0.82 | 0.84 | 10.18 | 0.83 | 1.02 |
| 9522 | -21.07 | 0.82 | 0.84 | 10.24 | 0.83 | 1.02 |
| 9523 | -20.97 | 0.82 | 0.84 | 10.27 | 0.83 | 1.02 |
| 9524 | -20.88 | 0.82 | 0.84 | 10.28 | 0.83 | 1.02 |
| 9525 | -20.81 | 0.82 | 0.83 | 10.27 | 0.83 | 1.02 |

[Table 670]

703

| 9526 | -20.75 | 0.82 | 0.83 | 10.22 | 0.83 | 1.02 |
|---|---|---|---|---|---|---|
| 9527 | -24.40 | 0.70 | 0.73 | 7.28 | 0.74 | 1.07 |
| 9528 | — | — | — | — | — | — |
| 9529 | -24.24 | 0.71 | 0.74 | 7.50 | 0.74 | 1.06 |
| 9530 | -23.42 | 0.73 | 0.76 | 8.56 | 0.76 | 1.06 |
| 9531 | -21.81 | 0.77 | 0.79 | 10.43 | 0.79 | 1.04 |
| 9532 | -21.66 | 0.77 | 0.79 | 10.58 | 0.79 | 1.04 |
| 9533 | -21.51 | 0.77 | 0.79 | 10.73 | 0.80 | 1.04 |
| 9534 | -21.38 | 0.78 | 0.79 | 10.86 | 0.80 | 1.04 |
| 9535 | -21.24 | 0.78 | 0.79 | 10.97 | 0.80 | 1.04 |
| 9536 | -21.12 | 0.78 | 0.79 | 11.07 | 0.80 | 1.04 |
| 9537 | -21.01 | 0.78 | 0.79 | 11.15 | 0.80 | 1.04 |
| 9538 | -20.91 | 0.78 | 0.78 | 11.21 | 0.80 | 1.04 |
| 9539 | -20.82 | 0.77 | 0.78 | 11.23 | 0.80 | 1.04 |
| 9540 | -20.74 | 0.77 | 0.78 | 11.23 | 0.80 | 1.04 |
| 9541 | -20.68 | 0.77 | 0.77 | 11.19 | 0.79 | 1.04 |
| 9542 | -24.99 | 0.66 | 0.68 | 6.85 | 0.70 | 1.07 |
| 9543 | — | — | — | — | — | — |
| 9544 | -24.79 | 0.66 | 0.69 | 7.14 | 0.70 | 1.07 |
| 9545 | -23.81 | 0.69 | 0.71 | 8.52 | 0.73 | 1.07 |
| 9546 | -21.97 | 0.72 | 0.74 | 10.92 | 0.76 | 1.06 |
| 9547 | -21.80 | 0.73 | 0.74 | 11.12 | 0.76 | 1.06 |
| 9548 | -21.64 | 0.73 | 0.74 | 11.30 | 0.76 | 1.06 |
| 9549 | -21.49 | 0.73 | 0.74 | 11.46 | 0.76 | 1.06 |
| 9550 | -21.35 | 0.73 | 0.74 | 11.61 | 0.76 | 1.06 |
| 9551 | -21.22 | 0.73 | 0.74 | 11.74 | 0.76 | 1.06 |
| 9552 | -21.10 | 0.73 | 0.74 | 11.84 | 0.76 | 1.06 |
| 9553 | -21.00 | 0.73 | 0.73 | 11.91 | 0.76 | 1.06 |
| 9554 | -20.91 | 0.73 | 0.73 | 11.95 | 0.76 | 1.06 |
| 9555 | -20.83 | 0.73 | 0.73 | 11.96 | 0.76 | 1.06 |
| 9556 | -20.78 | 0.72 | 0.72 | 11.93 | 0.76 | 1.06 |
| 9557 | -25.72 | 0.62 | 0.64 | 6.21 | 0.66 | 1.08 |
| 9558 | — | — | — | — | — | — |
| 9559 | -25.48 | 0.62 | 0.64 | 6.56 | 0.66 | 1.08 |
| 9560 | -24.34 | 0.65 | 0.66 | 8.24 | 0.69 | 1.08 |
| 9561 | -22.27 | 0.68 | 0.69 | 11.16 | 0.72 | 1.07 |
| 9562 | -22.10 | 0.68 | 0.69 | 11.40 | 0.73 | 1.07 |
| 9563 | -21.93 | 0.68 | 0.69 | 11.61 | 0.73 | 1.08 |
| 9564 | -21.77 | 0.68 | 0.69 | 11.81 | 0.73 | 1.08 |
| 9565 | -21.62 | 0.68 | 0.69 | 11.99 | 0.73 | 1.08 |
| 9566 | -21.48 | 0.68 | 0.69 | 12.14 | 0.73 | 1.08 |
| 9567 | -21.35 | 0.68 | 0.69 | 12.26 | 0.73 | 1.08 |
| 9568 | -21.24 | 0.68 | 0.68 | 12.35 | 0.73 | 1.08 |
| 9569 | -21.15 | 0.68 | 0.68 | 12.40 | 0.73 | 1.08 |
| 9570 | -21.08 | 0.68 | 0.68 | 12.42 | 0.73 | 1.08 |
| 9571 | -21.03 | 0.68 | 0.67 | 12.39 | 0.73 | 1.08 |
| 9572 | -26.63 | 0.58 | 0.59 | 5.35 | 0.61 | 1.07 |
| 9573 | — | — | — | — | — | — |
| 9574 | -26.36 | 0.58 | 0.59 | 5.75 | 0.62 | 1.08 |
| 9575 | -25.04 | 0.60 | 0.62 | 7.70 | 0.65 | 1.08 |

[Table 671]

704

| | | | | | | |
|---|---|---|---|---|---|---|
| 9576 | -22.75 | 0.64 | 0.64 | 11.11 | 0.69 | 1.09 |
| 9577 | -22.56 | 0.64 | 0.64 | 11.38 | 0.69 | 1.09 |
| 9578 | -22.38 | 0.64 | 0.64 | 11.63 | 0.69 | 1.09 |
| 9579 | -22.21 | 0.64 | 0.64 | 11.86 | 0.69 | 1.09 |
| 9580 | -22.05 | 0.64 | 0.64 | 12.06 | 0.69 | 1.10 |
| 9581 | -21.91 | 0.64 | 0.64 | 12.23 | 0.70 | 1.10 |
| 9582 | -21.78 | 0.64 | 0.64 | 12.37 | 0.70 | 1.10 |
| 9583 | -21.66 | 0.64 | 0.64 | 12.48 | 0.70 | 1.10 |
| 9584 | -21.57 | 0.64 | 0.63 | 12.55 | 0.70 | 1.10 |
| 9585 | -21.50 | 0.63 | 0.63 | 12.57 | 0.69 | 1.10 |
| 9586 | -21.45 | 0.63 | 0.63 | 12.54 | 0.69 | 1.10 |
| 9587 | -27.76 | 0.53 | 0.54 | 4.27 | 0.56 | 1.06 |
| 9588 | — | — | — | — | — | — |
| 9589 | -27.45 | 0.54 | 0.54 | 4.71 | 0.57 | 1.07 |
| 9590 | -25.95 | 0.56 | 0.57 | 6.89 | 0.60 | 1.08 |
| 9591 | -23.42 | 0.59 | 0.59 | 10.72 | 0.65 | 1.10 |
| 9592 | -23.21 | 0.59 | 0.60 | 11.02 | 0.65 | 1.11 |
| 9593 | -23.02 | 0.60 | 0.60 | 11.31 | 0.65 | 1.11 |
| 9594 | -22.84 | 0.60 | 0.60 | 11.56 | 0.66 | 1.11 |
| 9595 | -22.67 | 0.60 | 0.60 | 11.79 | 0.66 | 1.11 |
| 9596 | -22.52 | 0.60 | 0.59 | 11.98 | 0.66 | 1.11 |
| 9597 | -22.38 | 0.60 | 0.59 | 12.14 | 0.66 | 1.12 |
| 9598 | -22.27 | 0.59 | 0.59 | 12.26 | 0.66 | 1.12 |
| 9599 | -22.18 | 0.59 | 0.59 | 12.33 | 0.66 | 1.12 |
| 9600 | -22.11 | 0.59 | 0.58 | 12.36 | 0.66 | 1.12 |
| 9601 | -22.07 | 0.59 | 0.58 | 12.33 | 0.65 | 1.12 |
| 9602 | -21.58 | 0.90 | 0.96 | 8.20 | 0.90 | 1.01 |
| 9603 | — | — | — | — | — | — |
| 9604 | — | — | — | — | — | — |
| 9605 | -21.61 | 0.91 | 0.97 | 8.06 | 0.90 | 1.01 |
| 9606 | -22.05 | 0.98 | 1.05 | 6.52 | 0.94 | 0.98 |
| 9607 | -22.87 | 1.06 | 1.13 | 4.18 | 0.99 | 0.95 |
| 9608 | -22.92 | 1.06 | 1.14 | 3.98 | 0.99 | 0.95 |
| 9609 | -22.97 | 1.07 | 1.14 | 3.80 | 1.00 | 0.95 |
| 9610 | -23.01 | 1.07 | 1.15 | 3.63 | 1.00 | 0.95 |
| 9611 | -23.03 | 1.08 | 1.15 | 3.47 | 1.00 | 0.95 |
| 9612 | -23.04 | 1.08 | 1.16 | 3.32 | 1.01 | 0.95 |
| 9613 | -23.05 | 1.08 | 1.16 | 3.19 | 1.01 | 0.95 |
| 9614 | -23.04 | 1.09 | 1.16 | 3.06 | 1.01 | 0.95 |
| 9615 | -23.03 | 1.09 | 1.16 | 2.94 | 1.01 | 0.95 |
| 9616 | -23.01 | 1.09 | 1.16 | 2.82 | 1.02 | 0.95 |
| 9617 | -22.99 | 1.09 | 1.16 | 2.70 | 1.02 | 0.95 |
| 9618 | -21.97 | 0.85 | 0.92 | 8.22 | 0.87 | 1.03 |
| 9619 | — | — | — | — | — | — |
| 9620 | — | — | — | — | — | — |
| 9621 | -21.96 | 0.86 | 0.92 | 8.15 | 0.87 | 1.03 |
| 9622 | -22.11 | 0.93 | 0.99 | 7.14 | 0.91 | 0.99 |
| 9623 | -22.47 | 1.00 | 1.07 | 5.45 | 0.95 | 0.97 |
| 9624 | -22.48 | 1.01 | 1.07 | 5.31 | 0.96 | 0.96 |
| 9625 | -22.49 | 1.01 | 1.08 | 5.17 | 0.96 | 0.96 |

[Table 672]

| 9626 | -22.49 | 1.02 | 1.08 | 5.04 | 0.96 | 0.96 |
|---|---|---|---|---|---|---|
| 9627 | -22.49 | 1.02 | 1.08 | 4.92 | 0.97 | 0.96 |
| 9628 | -22.48 | 1.03 | 1.09 | 4.81 | 0.97 | 0.96 |
| 9629 | -22.46 | 1.03 | 1.09 | 4.70 | 0.97 | 0.96 |
| 9630 | -22.44 | 1.03 | 1.09 | 4.59 | 0.97 | 0.96 |
| 9631 | -22.41 | 1.03 | 1.09 | 4.49 | 0.98 | 0.96 |
| 9632 | -22.38 | 1.03 | 1.09 | 4.38 | 0.98 | 0.96 |
| 9633 | -22.35 | 1.03 | 1.09 | 4.27 | 0.98 | 0.96 |
| 9634 | -22.41 | 0.81 | 0.87 | 8.11 | 0.84 | 1.04 |
| 9635 | – | – | – | – | – | – |
| 9636 | – | – | – | – | – | – |
| 9637 | -22.37 | 0.82 | 0.88 | 8.10 | 0.84 | 1.04 |
| 9638 | -22.22 | 0.88 | 0.94 | 7.66 | 0.88 | 1.01 |
| 9639 | -22.14 | 0.95 | 1.00 | 6.65 | 0.92 | 0.98 |
| 9640 | -22.12 | 0.96 | 1.01 | 6.56 | 0.92 | 0.98 |
| 9641 | -22.09 | 0.96 | 1.01 | 6.47 | 0.93 | 0.98 |
| 9642 | -22.06 | 0.96 | 1.01 | 6.39 | 0.93 | 0.98 |
| 9643 | -22.02 | 0.97 | 1.02 | 6.31 | 0.93 | 0.98 |
| 9644 | -21.99 | 0.97 | 1.02 | 6.24 | 0.93 | 0.97 |
| 9645 | -21.94 | 0.97 | 1.02 | 6.16 | 0.94 | 0.97 |
| 9646 | -21.90 | 0.97 | 1.02 | 6.08 | 0.94 | 0.97 |
| 9647 | -21.86 | 0.98 | 1.02 | 6.00 | 0.94 | 0.97 |
| 9648 | -21.81 | 0.98 | 1.02 | 5.91 | 0.94 | 0.97 |
| 9649 | -21.78 | 0.97 | 1.02 | 5.81 | 0.94 | 0.97 |
| 9650 | -22.92 | 0.77 | 0.82 | 7.84 | 0.80 | 1.06 |
| 9651 | – | – | – | – | – | – |
| 9652 | – | – | – | – | – | – |
| 9653 | -22.84 | 0.78 | 0.83 | 7.90 | 0.81 | 1.05 |
| 9654 | -22.40 | 0.84 | 0.89 | 8.04 | 0.85 | 1.03 |
| 9655 | -21.91 | 0.90 | 0.94 | 7.73 | 0.88 | 1.00 |
| 9656 | -21.85 | 0.90 | 0.95 | 7.70 | 0.89 | 1.00 |
| 9657 | -21.79 | 0.91 | 0.95 | 7.67 | 0.89 | 0.99 |
| 9658 | -21.72 | 0.91 | 0.95 | 7.39 | 0.89 | 0.99 |
| 9659 | -21.66 | 0.91 | 0.95 | 7.60 | 0.89 | 0.99 |
| 9660 | -21.60 | 0.92 | 0.95 | 7.57 | 0.90 | 0.99 |
| 9661 | -21.53 | 0.92 | 0.96 | 7.53 | 0.90 | 0.99 |
| 9662 | -21.47 | 0.92 | 0.96 | 7.49 | 0.90 | 0.99 |
| 9663 | -21.40 | 0.92 | 0.95 | 7.43 | 0.90 | 0.99 |
| 9664 | -21.35 | 0.92 | 0.95 | 7.36 | 0.90 | 0.99 |
| 9665 | -21.30 | 0.92 | 0.95 | 7.28 | 0.90 | 0.99 |
| 9666 | -23.52 | 0.73 | 0.78 | 7.41 | 0.77 | 1.07 |
| 9667 | – | – | – | – | – | – |
| 9668 | – | – | – | – | – | – |
| 9669 | -23.41 | 0.74 | 0.78 | 7.54 | 0.78 | 1.07 |
| 9670 | -22.66 | 0.79 | 0.84 | 8.27 | 0.81 | 1.04 |
| 9671 | -21.79 | 0.85 | 0.88 | 8.67 | 0.85 | 1.02 |
| 9672 | -21.69 | 0.85 | 0.89 | 8.31 | 0.85 | 1.01 |
| 9673 | -21.60 | 0.86 | 0.89 | 8.59 | 0.86 | 1.01 |
| 9674 | -21.51 | 0.86 | 0.89 | 8.74 | 0.86 | 1.01 |
| 9675 | -21.42 | 0.86 | 0.89 | 8.76 | 0.86 | 1.01 |

[Table 673]

| 9676 | -21.33 | 0.86 | 0.89 | 8.77 | 0.86 | 1.01 |
|---|---|---|---|---|---|---|
| 9677 | -21.24 | 0.87 | 0.89 | 8.77 | 0.86 | 1.01 |
| 9678 | -21.15 | 0.87 | 0.89 | 8.76 | 0.86 | 1.01 |
| 9679 | -21.08 | 0.87 | 0.89 | 8.73 | 0.86 | 1.01 |
| 9680 | -21.01 | 0.87 | 0.89 | 8.69 | 0.86 | 1.01 |
| 9681 | -20.95 | 0.87 | 0.89 | 8.63 | 0.86 | 1.01 |
| 9682 | -24.22 | 0.69 | 0.73 | 6.78 | 0.73 | 1.08 |
| 9683 | — | — | — | — | — | — |
| 9684 | — | — | — | — | — | — |
| 9685 | -24.07 | 0.70 | 0.73 | 6.99 | 0.74 | 1.07 |
| 9686 | -23.02 | 0.75 | 0.78 | 8.31 | 0.78 | 1.06 |
| 9687 | -21.78 | 0.80 | 0.83 | 9.28 | 0.82 | 1.03 |
| 9688 | -21.66 | 0.80 | 0.83 | 9.51 | 0.82 | 1.03 |
| 9689 | -21.54 | 0.81 | 0.83 | 9.59 | 0.82 | 1.03 |
| 9690 | -21.42 | 0.81 | 0.83 | 9.67 | 0.82 | 1.03 |
| 9691 | -21.30 | 0.81 | 0.83 | 9.73 | 0.82 | 1.03 |
| 9692 | -21.19 | 0.81 | 0.83 | 9.79 | 0.82 | 1.03 |
| 9693 | -21.08 | 0.81 | 0.83 | 9.83 | 0.83 | 1.03 |
| 9694 | -20.99 | 0.81 | 0.83 | 9.85 | 0.83 | 1.02 |
| 9695 | -20.90 | 0.81 | 0.83 | 9.86 | 0.83 | 1.02 |
| 9696 | -20.81 | 0.81 | 0.83 | 9.84 | 0.83 | 1.02 |
| 9697 | -20.74 | 0.81 | 0.83 | 9.80 | 0.82 | 1.02 |
| 9698 | -25.05 | 0.65 | 0.68 | 5.96 | 0.69 | 1.08 |
| 9699 | — | — | — | — | — | — |
| 9700 | — | — | — | — | — | — |
| 9701 | -24.86 | 0.65 | 0.69 | 6.23 | 0.70 | 1.08 |
| 9702 | -23.49 | 0.70 | 0.73 | 8.14 | 0.74 | 1.07 |
| 9703 | -21.91 | 0.75 | 0.77 | 9.96 | 0.78 | 1.05 |
| 9704 | -21.76 | 0.75 | 0.78 | 10.11 | 0.78 | 1.05 |
| 9705 | -21.61 | 0.76 | 0.78 | 10.25 | 0.78 | 1.05 |
| 9706 | -21.47 | 0.76 | 0.78 | 10.37 | 0.79 | 1.05 |
| 9707 | -21.34 | 0.76 | 0.78 | 10.48 | 0.79 | 1.05 |
| 9708 | -21.21 | 0.76 | 0.78 | 10.58 | 0.79 | 1.04 |
| 9709 | -21.08 | 0.76 | 0.78 | 10.66 | 0.79 | 1.04 |
| 9710 | -20.97 | 0.76 | 0.78 | 10.72 | 0.79 | 1.04 |
| 9711 | -20.87 | 0.76 | 0.78 | 10.76 | 0.79 | 1.04 |
| 9712 | -20.78 | 0.76 | 0.77 | 10.77 | 0.79 | 1.04 |
| 9713 | -20.71 | 0.76 | 0.77 | 10.75 | 0.79 | 1.04 |
| 9714 | -26.04 | 0.61 | 0.63 | 4.91 | 0.65 | 1.08 |
| 9715 | — | — | — | — | — | — |
| 9716 | — | — | — | — | — | — |
| 9717 | -25.81 | 0.61 | 0.64 | 5.25 | 0.65 | 1.08 |
| 9718 | -24.10 | 0.66 | 0.68 | 7.74 | 0.70 | 1.08 |
| 9719 | -22.19 | 0.70 | 0.72 | 10.25 | 0.74 | 1.07 |
| 9720 | -22.01 | 0.71 | 0.72 | 10.45 | 0.75 | 1.07 |
| 9721 | -21.85 | 0.71 | 0.72 | 10.65 | 0.75 | 1.07 |
| 9722 | -21.69 | 0.71 | 0.72 | 10.82 | 0.75 | 1.06 |
| 9723 | -21.53 | 0.71 | 0.73 | 10.98 | 0.75 | 1.06 |
| 9724 | -21.38 | 0.71 | 0.73 | 11.12 | 0.75 | 1.06 |
| 9725 | -21.25 | 0.71 | 0.72 | 11.24 | 0.75 | 1.06 |

[Table 674]

| | | | | | | |
|---|---|---|---|---|---|---|
| 9726 | -21.12 | 0.71 | 0.72 | 11.34 | 0.75 | 1.06 |
| 9727 | -21.01 | 0.71 | 0.72 | 11.40 | 0.75 | 1.06 |
| 9728 | -20.92 | 0.71 | 0.72 | 11.44 | 0.75 | 1.06 |
| 9729 | -20.84 | 0.71 | 0.71 | 11.44 | 0.75 | 1.06 |
| 9730 | -27.23 | 0.56 | 0.58 | 3.66 | 0.60 | 1.07 |
| 9731 | — | — | — | — | — | — |
| 9732 | — | — | — | — | — | — |
| 9733 | -26.95 | 0.57 | 0.58 | 4.06 | 0.61 | 1.08 |
| 9734 | -24.87 | 0.62 | 0.63 | 7.07 | 0.66 | 1.08 |
| 9735 | -22.64 | 0.66 | 0.67 | 10.24 | 0.70 | 1.08 |
| 9736 | -22.44 | 0.66 | 0.67 | 10.50 | 0.71 | 1.08 |
| 9737 | -22.25 | 0.66 | 0.67 | 10.75 | 0.71 | 1.08 |
| 9738 | -22.07 | 0.66 | 0.67 | 10.97 | 0.71 | 1.08 |
| 9739 | -21.90 | 0.67 | 0.67 | 11.18 | 0.71 | 1.08 |
| 9740 | -21.74 | 0.67 | 0.67 | 11.36 | 0.72 | 1.08 |
| 9741 | -21.59 | 0.67 | 0.67 | 11.52 | 0.72 | 1.08 |
| 9742 | -21.46 | 0.67 | 0.67 | 11.65 | 0.72 | 1.08 |
| 9743 | -21.34 | 0.67 | 0.67 | 11.74 | 0.72 | 1.08 |
| 9744 | -21.24 | 0.67 | 0.67 | 11.80 | 0.72 | 1.08 |
| 9745 | -21.16 | 0.66 | 0.66 | 11.81 | 0.71 | 1.08 |
| 9746 | -28.64 | 0.52 | 0.52 | 2.24 | 0.54 | 1.05 |
| 9747 | — | — | — | — | — | — |
| 9748 | — | — | — | — | — | — |
| 9749 | -28.31 | 0.53 | 0.53 | 2.68 | 0.55 | 1.06 |
| 9750 | -25.86 | 0.57 | 0.58 | 6.12 | 0.61 | 1.08 |
| 9751 | -23.28 | 0.61 | 0.62 | 9.91 | 0.66 | 1.10 |
| 9752 | -23.06 | 0.61 | 0.62 | 10.21 | 0.67 | 1.10 |
| 9753 | -22.85 | 0.62 | 0.62 | 10.51 | 0.67 | 1.10 |
| 9754 | -22.65 | 0.62 | 0.62 | 10.78 | 0.67 | 1.10 |
| 9755 | -22.47 | 0.62 | 0.62 | 11.03 | 0.68 | 1.10 |
| 9756 | -22.29 | 0.62 | 0.62 | 11.25 | 0.68 | 1.10 |
| 9757 | -22.13 | 0.62 | 0.62 | 11.44 | 0.68 | 1.10 |
| 9758 | -21.99 | 0.62 | 0.62 | 11.60 | 0.68 | 1.10 |
| 9759 | -21.86 | 0.62 | 0.62 | 11.72 | 0.68 | 1.10 |
| 9760 | -21.76 | 0.62 | 0.62 | 11.79 | 0.68 | 1.10 |
| 9761 | -21.68 | 0.62 | 0.61 | 11.82 | 0.68 | 1.11 |
| 9762 | -20.97 | 0.79 | 0.85 | 9.48 | 0.83 | 1.06 |
| 9763 | — | — | — | — | — | — |
| 9764 | — | — | — | — | — | — |
| 9765 | -20.91 | 0.80 | 0.86 | 9.51 | 0.84 | 1.06 |
| 9766 | -20.85 | 0.81 | 0.87 | 9.53 | 0.84 | 1.05 |
| 9767 | -20.73 | 0.90 | 0.96 | 8.75 | 0.89 | 1.01 |
| 9768 | -21.26 | 0.98 | 1.04 | 6.58 | 0.94 | 0.97 |
| 9769 | -21.34 | 0.99 | 1.05 | 6.33 | 0.95 | 0.97 |
| 9770 | -21.41 | 1.00 | 1.06 | 6.09 | 0.95 | 0.97 |
| 9771 | -21.49 | 1.00 | 1.07 | 5.84 | 0.95 | 0.96 |
| 9772 | -21.56 | 1.01 | 1.07 | 5.60 | 0.96 | 0.96 |
| 9773 | -21.62 | 1.01 | 1.08 | 5.37 | 0.96 | 0.96 |
| 9774 | -21.68 | 1.02 | 1.08 | 5.14 | 0.97 | 0.96 |
| 9775 | -21.73 | 1.02 | 1.08 | 4.92 | 0.97 | 0.96 |

[Table 675]

| | | | | | | |
|---|---|---|---|---|---|---|
| 9776 | -21.78 | 1.03 | 1.09 | 4.70 | 0.97 | 0.96 |
| 9777 | -21.83 | 1.03 | 1.09 | 4.48 | 0.98 | 0.96 |
| 9778 | -21.86 | 1.03 | 1.09 | 4.27 | 0.98 | 0.96 |
| 9779 | -21.72 | 0.75 | 0.81 | 8.81 | 0.80 | 1.07 |
| 9780 | – | – | – | – | – | – |
| 9781 | – | – | – | – | – | – |
| 9782 | -21.63 | 0.76 | 0.81 | 8.91 | 0.80 | 1.07 |
| 9783 | -21.54 | 0.77 | 0.82 | 9.00 | 0.81 | 1.07 |
| 9784 | -21.08 | 0.85 | 0.91 | 8.94 | 0.86 | 1.03 |
| 9785 | -21.17 | 0.93 | 0.98 | 7.56 | 0.91 | 0.99 |
| 9786 | -21.19 | 0.94 | 0.99 | 7.38 | 0.91 | 0.99 |
| 9787 | -21.21 | 0.94 | 0.99 | 7.21 | 0.92 | 0.98 |
| 9788 | -21.24 | 0.95 | 1.00 | 7.03 | 0.92 | 0.98 |
| 9789 | -21.26 | 0.95 | 1.00 | 6.86 | 0.92 | 0.98 |
| 9790 | -21.28 | 0.96 | 1.01 | 6.68 | 0.93 | 0.98 |
| 9791 | -21.30 | 0.96 | 1.01 | 6.51 | 0.93 | 0.98 |
| 9792 | -21.31 | 0.97 | 1.01 | 6.33 | 0.93 | 0.98 |
| 9793 | -21.32 | 0.97 | 1.02 | 6.16 | 0.93 | 0.98 |
| 9794 | -21.33 | 0.97 | 1.02 | 5.98 | 0.94 | 0.97 |
| 9795 | -21.34 | 0.97 | 1.02 | 5.80 | 0.94 | 0.97 |
| 9796 | -22.56 | 0.71 | 0.76 | 7.95 | 0.76 | 1.08 |
| 9797 | – | – | – | – | – | – |
| 9798 | – | – | – | – | – | – |
| 9799 | -22.44 | 0.72 | 0.77 | 8.12 | 0.77 | 1.08 |
| 9800 | -22.32 | 0.73 | 0.78 | 8.28 | 0.77 | 1.08 |
| 9801 | -21.51 | 0.81 | 0.85 | 8.98 | 0.83 | 1.04 |
| 9802 | -21.16 | 0.88 | 0.92 | 8.40 | 0.87 | 1.01 |
| 9803 | -21.14 | 0.88 | 0.93 | 8.30 | 0.88 | 1.00 |
| 9804 | -21.11 | 0.89 | 0.93 | 8.20 | 0.88 | 1.00 |
| 9805 | -21.09 | 0.89 | 0.94 | 8.10 | 0.88 | 1.00 |
| 9806 | -21.06 | 0.90 | 0.94 | 7.99 | 0.89 | 1.00 |
| 9807 | -21.04 | 0.90 | 0.94 | 7.88 | 0.89 | 1.00 |
| 9808 | -21.02 | 0.91 | 0.95 | 7.76 | 0.89 | 0.99 |
| 9809 | -20.99 | 0.91 | 0.95 | 7.64 | 0.89 | 0.99 |
| 9810 | -20.97 | 0.91 | 0.95 | 7.52 | 0.90 | 0.99 |
| 9811 | -20.95 | 0.91 | 0.95 | 7.38 | 0.90 | 0.99 |
| 9812 | -20.93 | 0.91 | 0.95 | 7.24 | 0.90 | 0.99 |
| 9813 | -23.54 | 0.67 | 0.71 | 6.88 | 0.72 | 1.09 |
| 9814 | – | – | – | – | – | – |
| 9815 | – | – | – | – | – | – |
| 9816 | -23.38 | 0.68 | 0.72 | 7.12 | 0.73 | 1.09 |
| 9817 | -23.22 | 0.68 | 0.73 | 7.35 | 0.74 | 1.09 |
| 9818 | -22.02 | 0.76 | 0.80 | 8.83 | 0.79 | 1.06 |
| 9819 | -21.25 | 0.82 | 0.86 | 9.08 | 0.84 | 1.03 |
| 9820 | -21.18 | 0.83 | 0.87 | 9.06 | 0.84 | 1.02 |
| 9821 | -21.11 | 0.83 | 0.87 | 9.04 | 0.84 | 1.02 |
| 9822 | -21.05 | 0.84 | 0.87 | 9.00 | 0.85 | 1.02 |
| 9823 | -20.98 | 0.84 | 0.88 | 8.97 | 0.85 | 1.02 |
| 9824 | -20.92 | 0.85 | 0.88 | 8.92 | 0.85 | 1.02 |
| 9825 | -20.86 | 0.85 | 0.88 | 8.87 | 0.85 | 1.01 |

[Table 676]

| 9826 | -20.80 | 0.85 | 0.88 | 8.80 | 0.86 | 1.01 |
|---|---|---|---|---|---|---|
| 9827 | -20.75 | 0.86 | 0.88 | 8.73 | 0.86 | 1.01 |
| 9828 | -20.70 | 0.86 | 0.88 | 8.64 | 0.86 | 1.01 |
| 9829 | -20.65 | 0.86 | 0.88 | 8.54 | 0.86 | 1.01 |
| 9830 | -24.66 | 0.63 | 0.66 | 5.59 | 0.68 | 1.09 |
| 9831 | — | — | — | — | — | — |
| 9832 | — | — | — | — | — | — |
| 9833 | -24.46 | 0.64 | 0.67 | 5.90 | 0.69 | 1.09 |
| 9834 | -24.26 | 0.64 | 0.68 | 6.19 | 0.69 | 1.09 |
| 9835 | -22.64 | 0.71 | 0.75 | 8.46 | 0.76 | 1.07 |
| 9836 | -21.45 | 0.77 | 0.81 | 9.56 | 0.80 | 1.05 |
| 9837 | -21.34 | 0.78 | 0.81 | 9.62 | 0.80 | 1.04 |
| 9838 | -21.24 | 0.78 | 0.81 | 9.34 | 0.81 | 1.04 |
| 9839 | -21.13 | 0.79 | 0.82 | 9.71 | 0.81 | 1.04 |
| 9840 | -21.03 | 0.79 | 0.82 | 9.74 | 0.81 | 1.04 |
| 9841 | -20.93 | 0.79 | 0.82 | 9.76 | 0.81 | 1.04 |
| 9842 | -20.84 | 0.80 | 0.82 | 9.77 | 0.82 | 1.03 |
| 9843 | -20.75 | 0.80 | 0.82 | 9.77 | 0.82 | 1.03 |
| 9844 | -20.67 | 0.80 | 0.82 | 9.75 | 0.82 | 1.03 |
| 9845 | -20.59 | 0.80 | 0.82 | 9.70 | 0.82 | 1.03 |
| 9846 | -20.53 | 0.80 | 0.82 | 9.64 | 0.82 | 1.03 |
| 9847 | -25.97 | 0.58 | 0.61 | 4.08 | 0.63 | 1.08 |
| 9848 | — | — | — | — | — | — |
| 9849 | — | — | — | — | — | — |
| 9850 | -25.72 | 0.59 | 0.62 | 4.45 | 0.64 | 1.09 |
| 9851 | -25.47 | 0.60 | 0.63 | 4.81 | 0.65 | 1.09 |
| 9852 | -23.40 | 0.67 | 0.70 | 7.84 | 0.72 | 1.08 |
| 9853 | -21.78 | 0.72 | 0.75 | 9.74 | 0.76 | 1.06 |
| 9854 | -21.64 | 0.73 | 0.75 | 9.93 | 0.77 | 1.06 |
| 9855 | -21.50 | 0.73 | 0.76 | 10.05 | 0.77 | 1.06 |
| 9856 | -21.36 | 0.74 | 0.76 | 10.17 | 0.77 | 1.06 |
| 9857 | -21.22 | 0.74 | 0.76 | 10.27 | 0.77 | 1.06 |
| 9858 | -21.10 | 0.74 | 0.76 | 10.36 | 0.78 | 1.05 |
| 9859 | -20.98 | 0.74 | 0.76 | 10.43 | 0.78 | 1.05 |
| 9860 | -20.86 | 0.75 | 0.76 | 10.48 | 0.78 | 1.05 |
| 9861 | -20.75 | 0.75 | 0.76 | 10.51 | 0.78 | 1.05 |
| 9862 | -20.66 | 0.75 | 0.76 | 10.51 | 0.78 | 1.05 |
| 9863 | -20.58 | 0.75 | 0.76 | 10.49 | 0.78 | 1.05 |
| 9864 | -27.50 | 0.54 | 0.55 | 2.38 | 0.57 | 1.07 |
| 9865 | — | — | — | — | — | — |
| 9866 | — | — | — | — | — | — |
| 9867 | -27.20 | 0.55 | 0.56 | 2.80 | 0.58 | 1.07 |
| 9868 | -26.90 | 0.55 | 0.57 | 3.21 | 0.59 | 1.08 |
| 9869 | -24.32 | 0.62 | 0.65 | 6.95 | 0.67 | 1.09 |
| 9870 | -22.28 | 0.68 | 0.70 | 9.73 | 0.72 | 1.08 |
| 9871 | -22.10 | 0.68 | 0.70 | 9.95 | 0.73 | 1.08 |
| 9872 | -21.92 | 0.68 | 0.70 | 10.15 | 0.73 | 1.08 |
| 9873 | -21.75 | 0.69 | 0.70 | 10.34 | 0.73 | 1.08 |
| 9874 | -21.59 | 0.69 | 0.71 | 10.51 | 0.74 | 1.08 |
| 9875 | -21.43 | 0.69 | 0.71 | 10.66 | 0.74 | 1.07 |

[Table 677]

| 9876 | -21.28 | 0.69 | 0.71 | 10.79 | 0.74 | 1.07 |
|------|--------|------|------|-------|------|------|
| 9877 | -21.15 | 0.70 | 0.71 | 10.90 | 0.74 | 1.07 |
| 9878 | -21.02 | 0.70 | 0.71 | 10.98 | 0.74 | 1.07 |
| 9879 | -20.91 | 0.70 | 0.70 | 11.03 | 0.74 | 1.07 |
| 9880 | -20.81 | 0.70 | 0.70 | 11.04 | 0.74 | 1.07 |
| 9881 | -21.19 | 0.69 | 0.75 | 8.97 | 0.76 | 1.10 |
| 9882 | — | — | — | — | — | — |
| 9883 | — | — | — | — | — | — |
| 9884 | -21.02 | 0.70 | 0.75 | 9.21 | 0.76 | 1.10 |
| 9885 | -20.59 | 0.73 | 0.78 | 9.83 | 0.78 | 1.09 |
| 9886 | -19.65 | 0.81 | 0.87 | 10.59 | 0.84 | 1.04 |
| 9887 | -19.50 | 0.90 | 0.95 | 9.37 | 0.89 | 1.00 |
| 9888 | -19.53 | 0.91 | 0.96 | 9.15 | 0.89 | 0.99 |
| 9889 | -19.57 | 0.91 | 0.96 | 8.92 | 0.90 | 0.99 |
| 9890 | -19.61 | 0.92 | 0.97 | 8.68 | 0.90 | 0.99 |
| 9891 | -19.66 | 0.93 | 0.98 | 8.43 | 0.91 | 0.98 |
| 9892 | -19.72 | 0.94 | 0.98 | 8.17 | 0.91 | 0.98 |
| 9893 | -19.78 | 0.94 | 0.99 | 7.91 | 0.91 | 0.98 |
| 9894 | -19.84 | 0.95 | 0.99 | 7.63 | 0.92 | 0.98 |
| 9895 | -19.92 | 0.95 | 1.00 | 7.34 | 0.92 | 0.98 |
| 9896 | -19.99 | 0.96 | 1.00 | 7.05 | 0.92 | 0.97 |
| 9897 | -20.07 | 0.96 | 1.00 | 6.75 | 0.93 | 0.97 |
| 9898 | -22.40 | 0.65 | 0.70 | 7.49 | 0.71 | 1.10 |
| 9899 | — | — | — | — | — | — |
| 9900 | — | — | — | — | — | — |
| 9901 | -22.19 | 0.66 | 0.70 | 7.80 | 0.72 | 1.10 |
| 9902 | -21.64 | 0.68 | 0.73 | 8.64 | 0.74 | 1.10 |
| 9903 | -20.35 | 0.77 | 0.81 | 10.20 | 0.81 | 1.06 |
| 9904 | -19.81 | 0.85 | 0.89 | 9.85 | 0.85 | 1.02 |
| 9905 | -19.79 | 0.85 | 0.90 | 9.73 | 0.86 | 1.02 |
| 9906 | -19.78 | 0.86 | 0.90 | 9.59 | 0.86 | 1.01 |
| 9907 | -19.77 | 0.87 | 0.91 | 9.43 | 0.87 | 1.01 |
| 9908 | -19.77 | 0.87 | 0.91 | 9.27 | 0.87 | 1.01 |
| 9909 | -19.77 | 0.88 | 0.92 | 9.09 | 0.87 | 1.00 |
| 9910 | -19.78 | 0.88 | 0.92 | 8.90 | 0.88 | 1.00 |
| 9911 | -19.80 | 0.89 | 0.93 | 8.70 | 0.88 | 1.00 |
| 9912 | -19.82 | 0.89 | 0.93 | 8.49 | 0.88 | 1.00 |
| 9913 | -19.84 | 0.90 | 0.93 | 8.27 | 0.89 | 1.00 |
| 9914 | -19.87 | 0.90 | 0.93 | 8.03 | 0.89 | 0.99 |
| 9915 | -23.79 | 0.61 | 0.64 | 5.76 | 0.67 | 1.10 |
| 9916 | — | — | — | — | — | — |
| 9917 | — | — | — | — | — | — |
| 9918 | -23.54 | 0.62 | 0.65 | 6.14 | 0.68 | 1.10 |
| 9919 | -22.86 | 0.64 | 0.68 | 7.19 | 0.70 | 1.10 |
| 9920 | -21.16 | 0.72 | 0.76 | 9.58 | 0.77 | 1.08 |
| 9921 | -20.20 | 0.79 | 0.83 | 10.14 | 0.82 | 1.04 |
| 9922 | -20.14 | 0.80 | 0.84 | 10.11 | 0.82 | 1.04 |
| 9923 | -20.08 | 0.81 | 0.84 | 10.06 | 0.83 | 1.03 |
| 9924 | -20.03 | 0.81 | 0.85 | 9.99 | 0.83 | 1.03 |
| 9925 | -19.98 | 0.82 | 0.85 | 9.91 | 0.83 | 1.03 |

[Table 678]

EP 4 442 787 A1

| | | | | | | |
|---|---|---|---|---|---|---|
| 9926 | -19.94 | 0.82 | 0.86 | 9.83 | 0.84 | 1.03 |
| 9927 | -19.90 | 0.83 | 0.86 | 9.72 | 0.84 | 1.02 |
| 9928 | -19.87 | 0.83 | 0.86 | 9.60 | 0.84 | 1.02 |
| 9929 | -19.84 | 0.83 | 0.87 | 9.46 | 0.84 | 1.02 |
| 9930 | -19.82 | 0.84 | 0.87 | 9.31 | 0.85 | 1.02 |
| 9931 | -19.81 | 0.84 | 0.87 | 9.14 | 0.85 | 1.02 |
| 9932 | -25.40 | 0.56 | 0.59 | 3.82 | 0.61 | 1.09 |
| 9933 | — | — | — | — | — | — |
| 9934 | — | — | — | — | — | — |
| 9935 | -25.10 | 0.57 | 0.60 | 4.25 | 0.62 | 1.09 |
| 9936 | -24.27 | 0.60 | 0.63 | 5.49 | 0.65 | 1.10 |
| 9937 | -22.10 | 0.67 | 0.71 | 8.69 | 0.73 | 1.09 |
| 9938 | -20.71 | 0.74 | 0.77 | 10.19 | 0.78 | 1.06 |
| 9939 | -20.60 | 0.75 | 0.78 | 10.25 | 0.79 | 1.06 |
| 9940 | -20.50 | 0.75 | 0.78 | 10.30 | 0.79 | 1.06 |
| 9941 | -20.40 | 0.76 | 0.79 | 10.32 | 0.79 | 1.05 |
| 9942 | -20.31 | 0.76 | 0.79 | 10.33 | 0.80 | 1.05 |
| 9943 | -20.22 | 0.77 | 0.80 | 10.33 | 0.80 | 1.05 |
| 9944 | -20.14 | 0.77 | 0.80 | 10.31 | 0.80 | 1.04 |
| 9945 | -20.07 | 0.78 | 0.80 | 10.27 | 0.80 | 1.04 |
| 9946 | -20.00 | 0.78 | 0.80 | 10.21 | 0.81 | 1.04 |
| 9947 | -19.94 | 0.78 | 0.80 | 10.13 | 0.81 | 1.04 |
| 9948 | -19.89 | 0.78 | 0.80 | 10.03 | 0.81 | 1.04 |
| 9949 | -27.28 | 0.52 | 0.53 | 1.71 | 0.55 | 1.06 |
| 9950 | — | — | — | — | — | — |
| 9951 | — | — | — | — | — | — |
| 9952 | -26.92 | 0.53 | 0.54 | 2.17 | 0.56 | 1.07 |
| 9953 | -25.92 | 0.55 | 0.57 | 3.54 | 0.60 | 1.08 |
| 9954 | -23.22 | 0.63 | 0.66 | 7.50 | 0.68 | 1.10 |
| 9955 | -21.35 | 0.69 | 0.72 | 9.96 | 0.74 | 1.08 |
| 9956 | -21.20 | 0.70 | 0.72 | 10.11 | 0.75 | 1.08 |
| 9957 | -21.05 | 0.70 | 0.73 | 10.25 | 0.75 | 1.08 |
| 9958 | -20.91 | 0.71 | 0.73 | 10.37 | 0.75 | 1.07 |
| 9959 | -20.78 | 0.71 | 0.73 | 10.47 | 0.76 | 1.07 |
| 9960 | -20.65 | 0.72 | 0.74 | 10.56 | 0.76 | 1.07 |
| 9961 | -20.53 | 0.72 | 0.74 | 10.62 | 0.76 | 1.07 |
| 9962 | -20.42 | 0.72 | 0.74 | 10.66 | 0.76 | 1.06 |
| 9963 | -20.31 | 0.72 | 0.74 | 10.68 | 0.76 | 1.06 |
| 9964 | -20.22 | 0.73 | 0.74 | 10.68 | 0.77 | 1.06 |
| 9965 | -20.14 | 0.73 | 0.74 | 10.64 | 0.77 | 1.06 |
| 9966 | -23.12 | 0.58 | 0.61 | 5.44 | 0.64 | 1.11 |
| 9967 | — | — | — | — | — | — |
| 9968 | — | — | — | — | — | — |
| 9969 | -22.79 | 0.59 | 0.62 | 5.93 | 0.65 | 1.11 |
| 9970 | -21.08 | 0.64 | 0.68 | 8.59 | 0.71 | 1.11 |
| 9971 | -19.05 | 0.72 | 0.77 | 11.48 | 0.78 | 1.08 |
| 9972 | -17.95 | 0.81 | 0.85 | 11.98 | 0.83 | 1.04 |
| 9973 | -17.89 | 0.81 | 0.85 | 11.90 | 0.84 | 1.03 |
| 9974 | -17.84 | 0.82 | 0.86 | 11.79 | 0.84 | 1.03 |
| 9975 | -17.79 | 0.83 | 0.87 | 11.65 | 0.85 | 1.02 |

[Table 679]

712

| 9976 | -17.76 | 0.84 | 0.87 | 11.50 | 0.85 | 1.02 |
|---|---|---|---|---|---|---|
| 9977 | -17.74 | 0.84 | 0.88 | 11.32 | 0.85 | 1.01 |
| 9978 | -17.72 | 0.85 | 0.89 | 11.11 | 0.86 | 1.01 |
| 9979 | -17.72 | 0.86 | 0.89 | 10.89 | 0.86 | 1.01 |
| 9980 | -17.73 | 0.86 | 0.90 | 10.64 | 0.86 | 1.00 |
| 9981 | -17.76 | 0.87 | 0.90 | 10.36 | 0.87 | 1.00 |
| 9982 | -17.79 | 0.87 | 0.90 | 10.06 | 0.87 | 1.00 |
| 9983 | -25.13 | 0.53 | 0.55 | 2.99 | 0.58 | 1.09 |
| 9984 | — | — | — | — | — | — |
| 9985 | — | — | — | — | — | — |
| 9986 | -24.75 | 0.54 | 0.56 | 3.52 | 0.59 | 1.09 |
| 9987 | -22.70 | 0.59 | 0.63 | 6.52 | 0.65 | 1.11 |
| 9988 | -20.20 | 0.68 | 0.72 | 10.27 | 0.74 | 1.10 |
| 9989 | -18.70 | 0.75 | 0.79 | 11.77 | 0.80 | 1.06 |
| 9990 | -18.60 | 0.76 | 0.80 | 11.78 | 0.80 | 1.06 |
| 9991 | -18.51 | 0.77 | 0.80 | 11.77 | 0.80 | 1.05 |
| 9992 | -18.43 | 0.78 | 0.81 | 11.74 | 0.81 | 1.05 |
| 9993 | -18.35 | 0.78 | 0.81 | 11.68 | 0.81 | 1.04 |
| 9994 | -18.29 | 0.79 | 0.82 | 11.59 | 0.82 | 1.04 |
| 9995 | -18.23 | 0.79 | 0.82 | 9.87 | 0.82 | 1.04 |
| 9996 | -18.19 | 0.80 | 0.83 | 11.35 | 0.82 | 1.03 |
| 9997 | -18.15 | 0.80 | 0.83 | 11.19 | 0.83 | 1.03 |
| 9998 | -18.13 | 0.81 | 0.84 | 11.01 | 0.83 | 1.03 |
| 9999 | -18.12 | 0.81 | 0.84 | 10.80 | 0.83 | 1.02 |
| 10000 | -23.17 | 1.16 | 1.28 | 3.22 | 1.07 | 0.94 |
| 10001 | — | — | — | — | — | — |
| 10002 | -23.32 | 1.17 | 1.29 | 2.92 | 1.07 | 0.94 |
| 10003 | -23.86 | 1.21 | 1.33 | 1.84 | 1.09 | 0.93 |
| 10004 | -24.13 | 1.27 | 1.39 | 0.48 | 1.14 | 0.92 |
| 10005 | -24.07 | 1.27 | 1.40 | 0.46 | 1.14 | 0.92 |
| 10006 | -24.01 | 1.28 | 1.40 | 0.44 | 1.14 | 0.92 |
| 10007 | -23.92 | 1.28 | 1.40 | 0.44 | 1.15 | 0.92 |
| 10008 | -23.82 | 1.28 | 1.40 | 0.45 | 1.15 | 0.92 |
| 10009 | -23.72 | 1.28 | 1.40 | 0.46 | 1.15 | 0.92 |
| 10010 | -23.61 | 1.28 | 1.40 | 0.47 | 1.16 | 0.92 |
| 10011 | -23.50 | 1.28 | 1.39 | 0.49 | 1.16 | 0.92 |
| 10012 | -23.39 | 1.28 | 1.39 | 0.50 | 1.16 | 0.92 |
| 10013 | -23.28 | 1.28 | 1.38 | 0.50 | 1.16 | 0.93 |
| 10014 | -23.17 | 1.27 | 1.38 | 0.49 | 1.16 | 0.93 |
| 10015 | -22.70 | 1.18 | 1.29 | 3.15 | 1.08 | 0.93 |
| 10016 | — | — | — | — | — | — |
| 10017 | — | — | — | — | — | — |
| 10018 | -22.85 | 1.19 | 1.30 | 2.85 | 1.09 | 0.93 |
| 10019 | -23.39 | 1.22 | 1.34 | 1.76 | 1.11 | 0.93 |
| 10020 | -23.59 | 1.28 | 1.40 | 0.46 | 1.15 | 0.92 |
| 10021 | -23.51 | 1.28 | 1.41 | 0.44 | 1.15 | 0.92 |
| 10022 | -23.43 | 1.29 | 1.41 | 0.43 | 1.16 | 0.92 |
| 10023 | -23.34 | 1.29 | 1.41 | 0.43 | 1.16 | 0.92 |
| 10024 | -23.23 | 1.29 | 1.41 | 0.44 | 1.16 | 0.92 |
| 10025 | -23.12 | 1.29 | 1.41 | 0.45 | 1.16 | 0.92 |

[Table 680]

713

| | | | | | | |
|---|---|---|---|---|---|---|
| 10026 | -23.01 | 1.29 | 1.40 | 0.46 | 1.17 | 0.92 |
| 10027 | -22.87 | 1.29 | 1.40 | 0.48 | 1.17 | 0.92 |
| 10028 | -22.78 | 1.29 | 1.40 | 0.49 | 1.17 | 0.93 |
| 10029 | -22.66 | 1.28 | 1.39 | 0.49 | 1.17 | 0.93 |
| 10030 | -22.55 | 1.28 | 1.38 | 0.47 | 1.17 | 0.93 |
| 10031 | -21.99 | 1.20 | 1.32 | 2.93 | 1.10 | 0.93 |
| 10032 | — | — | — | — | — | — |
| 10033 | — | — | — | — | — | — |
| 10034 | -22.14 | 1.21 | 1.33 | 2.62 | 1.11 | 0.93 |
| 10035 | -22.66 | 1.24 | 1.37 | 1.55 | 1.13 | 0.92 |
| 10036 | -22.68 | 1.29 | 1.42 | 0.40 | 1.17 | 0.92 |
| 10037 | -22.59 | 1.30 | 1.42 | 0.39 | 1.17 | 0.92 |
| 10038 | -22.49 | 1.30 | 1.42 | 0.39 | 1.17 | 0.92 |
| 10039 | -22.39 | 1.30 | 1.42 | 0.40 | 1.18 | 0.92 |
| 10040 | -22.26 | 1.30 | 1.41 | 0.41 | 1.18 | 0.92 |
| 10041 | -22.14 | 1.30 | 1.41 | 0.43 | 1.18 | 0.92 |
| 10042 | -22.01 | 1.30 | 1.41 | 0.45 | 1.18 | 0.92 |
| 10043 | -21.87 | 1.30 | 1.41 | 0.46 | 1.18 | 0.93 |
| 10044 | -21.75 | 1.29 | 1.40 | 0.47 | 1.19 | 0.93 |
| 10045 | -21.62 | 1.29 | 1.39 | 0.46 | 1.19 | 0.93 |
| 10046 | -21.50 | 1.29 | 1.39 | 0.44 | 1.19 | 0.93 |
| 10047 | -21.36 | 1.22 | 1.34 | 2.60 | 1.12 | 0.93 |
| 10048 | — | — | — | — | — | — |
| 10049 | — | — | — | — | — | — |
| 10050 | -21.52 | 1.23 | 1.35 | 2.30 | 1.12 | 0.93 |
| 10051 | -21.99 | 1.26 | 1.38 | 1.29 | 1.14 | 0.92 |
| 10052 | -21.78 | 1.30 | 1.42 | 0.35 | 1.18 | 0.92 |
| 10053 | -21.67 | 1.30 | 1.42 | 0.35 | 1.19 | 0.92 |
| 10054 | -21.55 | 1.31 | 1.42 | 0.36 | 1.19 | 0.92 |
| 10055 | -21.43 | 1.31 | 1.42 | 0.38 | 1.19 | 0.92 |
| 10056 | -21.28 | 1.31 | 1.42 | 0.40 | 1.19 | 0.92 |
| 10057 | -21.13 | 1.30 | 1.41 | 0.43 | 1.19 | 0.93 |
| 10058 | -20.99 | 1.30 | 1.41 | 0.45 | 1.20 | 0.93 |
| 10059 | -20.85 | 1.30 | 1.41 | 0.46 | 1.20 | 0.93 |
| 10060 | -20.70 | 1.30 | 1.40 | 0.47 | 1.20 | 0.93 |
| 10061 | -20.56 | 1.29 | 1.39 | 0.46 | 1.20 | 0.93 |
| 10062 | -20.43 | 1.29 | 1.38 | 0.43 | 1.20 | 0.94 |
| 10063 | -20.80 | 1.24 | 1.35 | 2.22 | 1.13 | 0.93 |
| 10064 | — | — | — | — | — | — |
| 10065 | — | — | — | — | — | — |
| 10066 | -20.94 | 1.25 | 1.36 | 1.93 | 1.14 | 0.92 |
| 10067 | -21.34 | 1.27 | 1.39 | 1.01 | 1.16 | 0.92 |
| 10068 | -20.84 | 1.31 | 1.42 | 0.33 | 1.20 | 0.92 |
| 10069 | -20.70 | 1.31 | 1.42 | 0.35 | 1.20 | 0.92 |
| 10070 | -20.54 | 1.31 | 1.42 | 0.37 | 1.20 | 0.92 |
| 10071 | -20.42 | 1.31 | 1.42 | 0.40 | 1.20 | 0.93 |
| 10072 | -20.25 | 1.31 | 1.42 | 0.43 | 1.20 | 0.93 |
| 10073 | -20.09 | 1.31 | 1.41 | 0.46 | 1.21 | 0.93 |
| 10074 | -19.93 | 1.30 | 1.41 | 0.48 | 1.21 | 0.93 |
| 10075 | -19.77 | 1.30 | 1.40 | 0.50 | 1.21 | 0.93 |

[Table 681]

| 10076 | -19.62 | 1.29 | 1.39 | 0.50 | 1.21 | 0.94 |
|---|---|---|---|---|---|---|
| 10077 | -19.46 | 1.29 | 1.39 | 0.49 | 1.21 | 0.94 |
| 10078 | -19.32 | 1.28 | 1.38 | 0.46 | 1.21 | 0.94 |
| 10079 | -20.59 | 1.24 | 1.36 | 2.05 | 1.14 | 0.93 |
| 10080 | — | — | — | — | — | — |
| 10081 | — | — | — | — | — | — |
| 10082 | -20.73 | 1.25 | 1.37 | 1.77 | 1.14 | 0.92 |
| 10083 | -21.08 | 1.28 | 1.40 | 0.89 | 1.16 | 0.92 |
| 10084 | -20.44 | 1.31 | 1.42 | 0.33 | 1.20 | 0.92 |
| 10085 | -20.31 | 1.31 | 1.42 | 0.36 | 1.20 | 0.92 |
| 10086 | -20.15 | 1.31 | 1.42 | 0.39 | 1.20 | 0.93 |
| 10087 | -19.99 | 1.31 | 1.42 | 0.42 | 1.21 | 0.93 |
| 10088 | -19.84 | 1.31 | 1.41 | 0.46 | 1.21 | 0.93 |
| 10089 | -19.66 | 1.30 | 1.41 | 0.49 | 1.21 | 0.93 |
| 10090 | -19.50 | 1.30 | 1.40 | 0.51 | 1.21 | 0.93 |
| 10091 | -19.33 | 1.30 | 1.40 | 0.53 | 1.21 | 0.94 |
| 10092 | -19.17 | 1.29 | 1.39 | 0.53 | 1.21 | 0.94 |
| 10093 | -19.01 | 1.29 | 1.38 | 0.52 | 1.21 | 0.94 |
| 10094 | -18.86 | 1.28 | 1.37 | 0.48 | 1.21 | 0.94 |
| 10095 | -22.26 | 1.20 | 1.32 | 3.84 | 1.11 | 0.94 |
| 10096 | — | — | — | — | — | — |
| 10097 | — | — | — | — | — | — |
| 10098 | -22.41 | 1.21 | 1.33 | 3.53 | 1.11 | 0.94 |
| 10099 | -22.96 | 1.25 | 1.37 | 2.42 | 1.13 | 0.93 |
| 10100 | -23.27 | 1.31 | 1.45 | 1.00 | 1.18 | 0.92 |
| 10101 | -23.20 | 1.32 | 1.45 | 0.97 | 1.18 | 0.92 |
| 10102 | -23.14 | 1.32 | 1.45 | 0.95 | 1.19 | 0.92 |
| 10103 | -23.04 | 1.32 | 1.45 | 0.95 | 1.19 | 0.92 |
| 10104 | -22.94 | 1.32 | 1.45 | 0.96 | 1.19 | 0.92 |
| 10105 | -22.83 | 1.33 | 1.45 | 0.97 | 1.20 | 0.92 |
| 10106 | -22.71 | 1.33 | 1.45 | 0.99 | 1.20 | 0.92 |
| 10107 | -22.60 | 1.33 | 1.45 | 1.01 | 1.20 | 0.92 |
| 10108 | -22.49 | 1.32 | 1.45 | 1.02 | 1.20 | 0.93 |
| 10109 | -22.37 | 1.32 | 1.44 | 1.03 | 1.21 | 0.93 |
| 10110 | -22.26 | 1.32 | 1.43 | 1.02 | 1.21 | 0.93 |
| 10111 | -21.81 | 1.22 | 1.34 | 3.73 | 1.12 | 0.94 |
| 10112 | — | — | — | — | — | — |
| 10113 | — | — | — | — | — | — |
| 10114 | -21.97 | 1.22 | 1.35 | 3.42 | 1.12 | 0.94 |
| 10115 | -22.52 | 1.26 | 1.39 | 2.30 | 1.14 | 0.93 |
| 10116 | -22.74 | 1.32 | 1.45 | 0.95 | 1.19 | 0.92 |
| 10117 | -22.66 | 1.32 | 1.46 | 0.92 | 1.19 | 0.92 |
| 10118 | -22.58 | 1.33 | 1.46 | 0.91 | 1.20 | 0.92 |
| 10119 | -22.48 | 1.33 | 1.46 | 0.92 | 1.20 | 0.92 |
| 10120 | -22.40 | 1.33 | 1.46 | 0.93 | 1.20 | 0.92 |
| 10121 | -22.26 | 1.33 | 1.46 | **0.94** | 1.21 | 0.92 |
| 10122 | -22.14 | 1.33 | 1.46 | 0.96 | 1.21 | 0.92 |
| 10123 | -22.02 | 1.33 | 1.45 | 0.98 | 1.21 | 0.92 |
| 10124 | -21.89 | 1.33 | 1.45 | 0.99 | 1.21 | 0.93 |
| 10125 | -21.77 | 1.33 | 1.44 | 1.00 | 1.21 | 0.93 |

[Table 682]

| 10126 | -21.65 | 1.32 | 1.44 | 0.98 | 1.22 | 0.93 |
|---|---|---|---|---|---|---|
| 10127 | -21.15 | 1.24 | 1.36 | 3.46 | 1.13 | 0.93 |
| 10128 | — | — | — | — | — | — |
| 10129 | — | — | — | — | — | — |
| 10130 | -21.31 | 1.25 | 1.37 | 3.14 | 1.14 | 0.93 |
| 10131 | -21.84 | 1.28 | 1.41 | 2.05 | 1.16 | 0.92 |
| 10132 | -21.87 | 1.33 | 1.47 | 0.85 | 1.21 | 0.92 |
| 10133 | -21.78 | 1.34 | 1.47 | 0.84 | 1.21 | 0.92 |
| 10134 | -21.67 | 1.34 | 1.47 | 0.84 | 1.21 | 0.92 |
| 10135 | -21.56 | 1.34 | 1.47 | 0.86 | 1.22 | 0.92 |
| 10136 | -21.44 | 1.34 | 1.47 | **0.87** | 1.22 | 0.92 |
| 10137 | -21.30 | 1.34 | 1.46 | 0.89 | 1.22 | 0.92 |
| 10138 | -21.18 | 1.34 | 1.46 | 0.92 | 1.22 | 0.93 |
| 10139 | -21.04 | 1.34 | 1.46 | 0.94 | 1.23 | 0.93 |
| 10140 | -20.89 | 1.34 | 1.45 | 0.95 | 1.23 | 0.93 |
| 10141 | -20.76 | 1.33 | 1.45 | 0.95 | 1.23 | 0.93 |
| 10142 | -20.63 | 1.33 | 1.44 | 0.93 | 1.23 | 0.93 |
| 10143 | -20.39 | 1.25 | 1.37 | 3.41 | 1.14 | 0.93 |
| 10144 | — | — | — | — | — | — |
| 10145 | -20.56 | 1.26 | 1.38 | 3.09 | 1.15 | 0.93 |
| 10146 | -21.20 | 1.29 | 1.42 | 1.75 | 1.18 | 0.92 |
| 10147 | -20.99 | 1.34 | 1.47 | 0.78 | 1.22 | 0.92 |
| 10148 | -20.87 | 1.34 | 1.47 | 0.78 | 1.22 | 0.92 |
| 10149 | -20.75 | 1.34 | 1.47 | 0.80 | 1.23 | 0.92 |
| 10150 | -20.61 | 1.35 | 1.47 | 0.82 | 1.23 | 0.92 |
| 10151 | -20.46 | 1.35 | 1.47 | 0.85 | 1.23 | 0.92 |
| 10152 | -20.32 | 1.34 | 1.46 | 0.88 | 1.23 | 0.93 |
| 10153 | -20.16 | 1.34 | 1.46 | 0.90 | 1.24 | 0.93 |
| 10154 | -20.01 | 1.34 | 1.46 | 0.93 | 1.24 | 0.93 |
| 10155 | -19.86 | 1.34 | 1.45 | 0.94 | 1.24 | 0.93 |
| 10156 | -19.71 | 1.33 | 1.44 | 0.94 | 1.24 | 0.94 |
| 10157 | -19.57 | 1.33 | 1.43 | 0.92 | 1.24 | 0.94 |
| 10158 | -19.87 | 1.26 | 1.38 | 2.97 | 1.16 | 0.93 |
| 10159 | — | — | — | — | — | — |
| 10160 | — | — | — | — | — | — |
| 10161 | -20.03 | 1.27 | 1.39 | 2.66 | 1.16 | 0.93 |
| 10162 | -20.58 | 1.31 | 1.44 | 1.43 | 1.19 | 0.92 |
| 10163 | -20.07 | 1.35 | 1.47 | 0.74 | 1.23 | 0.92 |
| 10164 | -19.92 | 1.35 | 1.47 | 0.76 | 1.23 | 0.92 |
| 10165 | -19.77 | 1.35 | 1.47 | 0.80 | 1.24 | 0.93 |
| 10166 | -19.61 | 1.35 | 1.47 | 0.83 | 1.24 | 0.93 |
| 10167 | -19.45 | 1.35 | 1.46 | 0.87 | 1.24 | 0.93 |
| 10168 | -19.28 | 1.34 | 1.46 | 0.90 | 1.24 | 0.93 |
| 10169 | -19.11 | 1.34 | 1.45 | 0.94 | 1.25 | 0.93 |
| 10170 | -18.95 | 1.34 | 1.45 | 0.96 | 1.25 | 0.93 |
| 10171 | -18.78 | 1.33 | 1.44 | 0.97 | 1.25 | 0.94 |
| 10172 | -18.62 | 1.33 | 1.43 | 0.97 | 1.25 | 0.94 |
| 10173 | -18.46 | 1.32 | 1.43 | 0.94 | 1.25 | 0.94 |
| 10174 | -19.67 | 1.27 | 1.39 | 2.79 | 1.16 | 0.93 |
| 10175 | — | — | — | — | — | — |

[Table 683]

| 10176 | — | — | — | — | — | — |
|---|---|---|---|---|---|---|
| 10177 | -19.83 | 1.28 | 1.40 | 2.49 | 1.17 | 0.93 |
| 10178 | -20.33 | 1.31 | 1.44 | 1.31 | 1.20 | 0.92 |
| 10179 | -19.68 | 1.35 | 1.47 | 0.74 | 1.24 | 0.92 |
| 10180 | -19.53 | 1.35 | 1.47 | 0.77 | 1.24 | 0.93 |
| 10181 | -19.37 | 1.35 | 1.47 | 0.81 | 1.24 | 0.93 |
| 10182 | -19.20 | 1.35 | 1.46 | 0.85 | 1.24 | 0.93 |
| 10183 | -19.03 | 1.34 | 1.46 | 0.89 | 1.25 | 0.93 |
| 10184 | -18.86 | 1.34 | 1.46 | 0.93 | 1.25 | 0.93 |
| 10185 | -18.68 | 1.34 | 1.45 | 0.96 | 1.25 | 0.93 |
| 10186 | -18.51 | 1.34 | 1.45 | 0.99 | 1.25 | 0.94 |
| 10187 | -18.33 | 1.33 | 1.44 | 1.00 | 1.25 | 0.94 |
| 10188 | -18.16 | 1.33 | 1.43 | 1.00 | 1.25 | 0.94 |
| 10189 | -18.00 | 1.32 | 1.42 | 0.97 | 1.25 | 0.94 |
| 10190 | -21.17 | 1.23 | 1.35 | 4.79 | 1.14 | 0.95 |
| 10191 | — | — | — | — | — | — |
| 10192 | — | — | — | — | — | — |
| 10193 | -21.34 | 1.24 | 1.37 | 4.47 | 1.14 | 0.94 |
| 10194 | -22.07 | 1.28 | 1.42 | 3.00 | 1.17 | 0.93 |
| 10195 | -22.41 | 1.35 | 1.50 | 1.50 | 1.22 | 0.92 |
| 10196 | -22.35 | 1.36 | 1.50 | 1.47 | 1.22 | 0.92 |
| 10197 | -22.27 | 1.36 | 1.51 | 1.45 | 1.23 | 0.92 |
| 10198 | -22.18 | 1.37 | 1.51 | 1.45 | 1.23 | 0.92 |
| 10199 | -22.08 | 1.37 | 1.51 | 1.45 | 1.24 | 0.92 |
| 10200 | -21.97 | 1.37 | 1.51 | 1.46 | 1.24 | 0.92 |
| 10201 | -21.86 | 1.37 | 1.51 | 1.48 | 1.24 | 0.92 |
| 10202 | -21.74 | 1.37 | 1.51 | 1.50 | 1.24 | 0.92 |
| 10203 | -21.61 | 1.37 | 1.50 | 1.52 | 1.25 | 0.93 |
| 10204 | -21.49 | 1.37 | 1.50 | 1.52 | 1.25 | 0.93 |
| 10205 | -21.37 | 1.36 | 1.49 | 1.52 | 1.25 | 0.93 |
| 10206 | -20.76 | 1.24 | 1.37 | 4.65 | 1.15 | 0.94 |
| 10207 | — | — | — | — | — | — |
| 10208 | — | — | — | — | — | — |
| 10209 | -20.93 | 1.25 | 1.38 | 4.33 | 1.15 | 0.94 |
| 10210 | -21.66 | 1.30 | 1.44 | 2.86 | 1.18 | 0.93 |
| 10211 | -21.91 | 1.36 | 1.51 | 1.43 | 1.23 | 0.92 |
| 10212 | -21.84 | 1.37 | 1.51 | 1.40 | 1.23 | 0.92 |
| 10213 | -21.75 | 1.37 | 1.51 | 1.39 | 1.24 | 0.92 |
| 10214 | -21.65 | 1.37 | 1.51 | 1.39 | 1.24 | 0.92 |
| 10215 | -21.54 | 1.38 | 1.51 | 1.40 | 1.24 | 0.92 |
| 10216 | -21.42 | 1.38 | 1.51 | 1.41 | 1.25 | 0.92 |
| 10217 | -21.29 | 1.38 | 1.51 | 1.43 | 1.25 | 0.92 |
| 10218 | -21.17 | 1.38 | 1.51 | 1.45 | 1.25 | 0.92 |
| 10219 | -21.03 | 1.37 | 1.50 | 1.47 | 1.26 | 0.93 |
| 10220 | -20.91 | 1.37 | 1.50 | 1.47 | 1.26 | 0.93 |
| 10221 | -20.78 | 1.37 | 1.49 | 1.47 | 1.26 | 0.93 |
| 10222 | -20.13 | 1.26 | 1.39 | 4.33 | 1.16 | 0.94 |
| 10223 | — | — | — | — | — | — |
| 10224 | — | — | — | — | — | — |
| 10225 | -20.31 | 1.27 | 1.40 | 4.00 | 1.17 | 0.93 |

[Table 684]

717

EP 4 442 787 A1

| | | | | | |
|---|---|---|---|---|---|
| 10226 | -21.02 | 1.32 | 1.45 | 2.55 | 1.20 | 0.93 |
| 10227 | -21.07 | 1.37 | 1.51 | 1.30 | 1.24 | 0.92 |
| 10228 | -20.98 | 1.38 | 1.52 | 1.29 | 1.25 | 0.92 |
| 10229 | -20.87 | 1.38 | 1.52 | 1.29 | 1.25 | 0.92 |
| 10230 | -20.75 | 1.38 | 1.52 | 1.30 | 1.26 | 0.92 |
| 10231 | -20.62 | 1.38 | 1.52 | 1.32 | 1.26 | 0.92 |
| 10232 | -20.48 | 1.38 | 1.52 | 1.34 | 1.26 | 0.92 |
| 10233 | -20.34 | 1.38 | 1.51 | 1.37 | 1.26 | 0.93 |
| 10234 | -20.20 | 1.38 | 1.51 | 1.39 | 1.27 | 0.93 |
| 10235 | -20.06 | 1.38 | 1.50 | 1.41 | 1.27 | 0.93 |
| 10236 | -19.91 | 1.38 | 1.50 | 1.41 | 1.27 | 0.93 |
| 10237 | -19.77 | 1.37 | 1.49 | 1.40 | 1.27 | 0.93 |
| 10238 | -19.58 | 1.28 | 1.41 | 3.91 | 1.18 | 0.93 |
| 10239 | — | — | — | — | — | — |
| 10240 | — | — | — | — | — | — |
| 10241 | -19.75 | 1.29 | 1.42 | 3.58 | 1.18 | 0.93 |
| 10242 | -20.41 | 1.33 | 1.47 | 2.21 | 1.21 | 0.92 |
| 10243 | -20.21 | 1.38 | 1.52 | 1.20 | 1.26 | 0.92 |
| 10244 | -20.09 | 1.38 | 1.52 | 1.21 | 1.26 | 0.92 |
| 10245 | -19.96 | 1.38 | 1.52 | 1.23 | 1.26 | 0.92 |
| 10246 | -19.82 | 1.39 | 1.52 | 1.25 | 1.27 | 0.92 |
| 10247 | -19.67 | 1.39 | 1.52 | 1.28 | 1.27 | 0.92 |
| 10248 | -19.52 | 1.38 | 1.51 | 1.31 | 1.27 | 0.93 |
| 10249 | -19.35 | 1.38 | 1.51 | 1.34 | 1.28 | 0.93 |
| 10250 | -19.19 | 1.38 | 1.51 | 1.37 | 1.28 | 0.93 |
| 10251 | -19.03 | 1.38 | 1.50 | 1.39 | 1.28 | 0.93 |
| 10252 | -18.87 | 1.37 | 1.49 | 1.39 | 1.28 | 0.94 |
| 10253 | -18.72 | 1.37 | 1.48 | 1.38 | 1.28 | 0.94 |
| 10254 | -19.09 | 1.30 | 1.42 | 3.44 | 1.19 | 0.93 |
| 10255 | — | — | — | — | — | — |
| 10256 | — | — | — | — | — | — |
| 10257 | -19.25 | 1.30 | 1.43 | 3.13 | 1.20 | 0.93 |
| 10258 | -19.82 | 1.34 | 1.48 | 1.87 | 1.23 | 0.92 |
| 10259 | -19.30 | 1.38 | 1.52 | 1.15 | 1.27 | 0.92 |
| 10260 | -19.16 | 1.38 | 1.52 | 1.18 | 1.27 | 0.92 |
| 10261 | -19.00 | 1.38 | 1.51 | 1.21 | 1.27 | 0.93 |
| 10262 | -18.84 | 1.38 | 1.51 | 1.25 | 1.28 | 0.93 |
| 10263 | -18.66 | 1.38 | 1.51 | 1.29 | 1.28 | 0.93 |
| 10264 | -18.49 | 1.38 | 1.51 | 1.33 | 1.28 | 0.93 |
| 10265 | -18.31 | 1.38 | 1.50 | 1.37 | 1.28 | 0.93 |
| 10266 | -18.14 | 1.38 | 1.50 | 1.40 | 1.29 | 0.93 |
| 10267 | -17.96 | 1.37 | 1.49 | 1.42 | 1.29 | 0.94 |
| 10268 | -17.79 | 1.37 | 1.48 | 1.42 | 1.29 | 0.94 |
| 10269 | -17.62 | 1.36 | 1.47 | 1.41 | 1.29 | 0.94 |
| 10270 | -18.90 | 1.30 | 1.43 | 3.24 | 1.20 | 0.93 |
| 10271 | — | — | — | — | — | — |
| 10272 | — | — | — | — | — | — |
| 10273 | -19.06 | 1.31 | 1.44 | 2.94 | 1.20 | 0.93 |
| 10274 | -19.58 | 1.34 | 1.48 | 1.74 | 1.23 | 0.92 |
| 10275 | -18.92 | 1.38 | 1.51 | 1.15 | 1.27 | 0.92 |

[Table 685]

718

| | | | | | |
|---|---|---|---|---|---|
| 10276 | -18.77 | 1.38 | 1.51 | 1.19 | 1.28 | 0.93 |
| 10277 | -18.60 | 1.38 | 1.51 | 1.23 | 1.28 | 0.93 |
| 10278 | -18.43 | 1.38 | 1.51 | 1.27 | 1.28 | 0.93 |
| 10279 | -18.25 | 1.38 | 1.51 | 1.32 | 1.28 | 0.93 |
| 10280 | -18.06 | 1.38 | 1.50 | 1.36 | 1.29 | 0.93 |
| 10281 | -17.88 | 1.38 | 1.50 | 1.40 | 1.29 | 0.93 |
| 10282 | -17.70 | 1.38 | 1.49 | 1.43 | 1.29 | 0.94 |
| 10283 | -17.51 | 1.37 | 1.49 | 1.45 | 1.29 | 0.94 |
| 10284 | -17.34 | 1.37 | 1.48 | 1.45 | 1.29 | 0.94 |
| 10285 | -17.16 | 1.36 | 1.47 | 1.43 | 1.29 | 0.94 |
| 10286 | -20.26 | 1.26 | 1.40 | 5.44 | 1.18 | 0.95 |
| 10287 | — | — | — | — | — | — |
| 10288 | — | — | — | — | — | — |
| 10289 | -20.43 | 1.27 | 1.41 | 5.11 | 1.18 | 0.95 |
| 10290 | -21.19 | 1.32 | 1.47 | 3.59 | 1.21 | 0.93 |
| 10291 | -21.58 | 1.40 | 1.55 | 1.99 | 1.26 | 0.92 |
| 10292 | -21.52 | 1.40 | 1.56 | 1.95 | 1.26 | 0.92 |
| 10293 | -21.44 | 1.41 | 1.56 | 1.93 | 1.27 | 0.92 |
| 10294 | -21.35 | 1.41 | 1.56 | 1.91 | 1.27 | 0.92 |
| 10295 | -21.25 | 1.41 | 1.56 | 1.92 | 1.28 | 0.92 |
| 10296 | -21.14 | 1.42 | 1.56 | 1.93 | 1.28 | 0.92 |
| 10297 | -21.02 | 1.42 | 1.56 | 1.94 | 1.28 | 0.92 |
| 10298 | -20.90 | 1.42 | 1.56 | 1.96 | 1.29 | 0.92 |
| 10299 | -20.77 | 1.42 | 1.56 | 1.97 | 1.29 | 0.93 |
| 10300 | -20.64 | 1.41 | 1.55 | 1.98 | 1.29 | 0.93 |
| 10301 | -20.52 | 1.41 | 1.55 | 1.98 | 1.29 | 0.93 |
| 10302 | -19.87 | 1.28 | 1.41 | 5.26 | 1.19 | 0.94 |
| 10303 | — | — | — | — | — | — |
| 10304 | -20.04 | 1.29 | 1.43 | 4.93 | 1.19 | 0.94 |
| 10305 | -20.80 | 1.34 | 1.48 | 3.41 | 1.22 | 0.93 |
| 10306 | -21.10 | 1.41 | 1.56 | 1.89 | 1.27 | 0.92 |
| 10307 | -21.03 | 1.41 | 1.56 | 1.86 | 1.27 | 0.92 |
| 10308 | -20.94 | 1.41 | 1.57 | 1.84 | 1.28 | 0.92 |
| 10309 | -20.84 | 1.42 | 1.57 | 1.84 | 1.28 | 0.92 |
| 10310 | -20.73 | 1.42 | 1.57 | 1.84 | 1.28 | 0.92 |
| 10311 | -20.60 | 1.42 | 1.57 | 1.86 | 1.29 | 0.92 |
| 10312 | -20.48 | 1.42 | 1.57 | 1.87 | 1.29 | 0.92 |
| 10313 | -20.34 | 1.42 | 1.56 | 1.89 | 1.29 | 0.92 |
| 10314 | -20.21 | 1.42 | 1.56 | 1.91 | 1.30 | 0.93 |
| 10315 | -20.07 | 1.42 | 1.55 | 1.92 | 1.30 | 0.93 |
| 10316 | -19.94 | 1.41 | 1.55 | 1.92 | 1.30 | 0.93 |
| 10317 | -19.11 | 1.29 | 1.42 | 5.23 | 1.19 | 0.94 |
| 10318 | — | — | — | — | — | — |
| 10319 | -19.29 | 1.30 | 1.43 | 4.88 | 1.20 | 0.94 |
| 10320 | -20.20 | 1.35 | 1.50 | 3.06 | 1.23 | 0.93 |
| 10321 | -20.29 | 1.42 | 1.57 | 1.74 | 1.28 | 0.92 |
| 10322 | -20.19 | 1.42 | 1.57 | 1.72 | 1.29 | 0.92 |
| 10323 | -20.08 | 1.42 | 1.57 | 1.72 | 1.29 | 0.92 |
| 10324 | -19.96 | 1.42 | 1.57 | 1.73 | 1.29 | 0.92 |
| 10325 | -19.83 | 1.42 | 1.57 | 1.74 | 1.30 | 0.92 |

[Table 686]

| 10326 | -19.69 | 1.43 | 1.57 | 1.77 | 1.30 | 0.92 |
|---|---|---|---|---|---|---|
| 10327 | -19.54 | 1.43 | 1.57 | 1.79 | 1.30 | 0.92 |
| 10328 | -19.39 | 1.42 | 1.56 | 1.81 | 1.31 | 0.93 |
| 10329 | -19.24 | 1.42 | 1.56 | 1.83 | 1.31 | 0.93 |
| 10330 | -19.09 | 1.42 | 1.55 | 1.84 | 1.31 | 0.93 |
| 10331 | -18.94 | 1.41 | 1.54 | 1.84 | 1.31 | 0.93 |
| 10332 | -18.59 | 1.31 | 1.44 | 4.77 | 1.21 | 0.93 |
| 10333 | — | — | — | — | — | — |
| 10334 | — | — | — | — | — | — |
| 10335 | -18.77 | 1.32 | 1.45 | 4.42 | 1.21 | 0.93 |
| 10336 | -19.63 | 1.37 | 1.51 | 2.68 | 1.25 | 0.92 |
| 10337 | -19.45 | 1.42 | 1.57 | 1.62 | 1.29 | 0.92 |
| 10338 | -19.32 | 1.42 | 1.57 | 1.62 | 1.30 | 0.92 |
| 10339 | -19.19 | 1.42 | 1.57 | 1.64 | 1.30 | 0.92 |
| 10340 | -19.05 | 1.43 | 1.57 | 1.66 | 1.31 | 0.92 |
| 10341 | -18.89 | 1.43 | 1.57 | 1.69 | 1.31 | 0.92 |
| 10342 | -18.73 | 1.43 | 1.56 | 1.72 | 1.31 | 0.93 |
| 10343 | -18.56 | 1.42 | 1.56 | 1.76 | 1.31 | 0.93 |
| 10344 | -18.40 | 1.42 | 1.56 | 1.79 | 1.32 | 0.93 |
| 10345 | -18.23 | 1.42 | 1.55 | 1.81 | 1.32 | 0.93 |
| 10346 | -18.06 | 1.42 | 1.54 | 1.82 | 1.32 | 0.93 |
| 10347 | -17.90 | 1.41 | 1.53 | 1.81 | 1.32 | 0.94 |
| 10348 | -18.13 | 1.32 | 1.45 | 4.25 | 1.22 | 0.93 |
| 10349 | — | — | — | — | — | — |
| 10350 | — | — | — | — | — | — |
| 10351 | -18.31 | 1.33 | 1.46 | 3.92 | 1.22 | 0.93 |
| 10352 | -19.06 | 1.38 | 1.52 | 2.31 | 1.26 | 0.92 |
| 10353 | -18.55 | 1.42 | 1.56 | 1.56 | 1.30 | 0.92 |
| 10354 | -18.40 | 1.42 | 1.56 | 1.58 | 1.31 | 0.92 |
| 10355 | -18.24 | 1.42 | 1.56 | 1.62 | 1.31 | 0.92 |
| 10356 | -18.07 | 1.42 | 1.56 | 1.66 | 1.31 | 0.93 |
| 10357 | -17.89 | 1.42 | 1.56 | 1.70 | 1.32 | 0.93 |
| 10358 | -17.71 | 1.42 | 1.55 | 1.74 | 1.32 | 0.93 |
| 10359 | -17.53 | 1.42 | 1.55 | 1.79 | 1.32 | 0.93 |
| 10360 | -17.34 | 1.42 | 1.55 | 1.82 | 1.32 | 0.93 |
| 10361 | -17.16 | 1.41 | 1.54 | 1.84 | 1.33 | 0.94 |
| 10362 | -16.98 | 1.41 | 1.53 | 1.85 | 1.33 | 0.94 |
| 10363 | -16.80 | 1.40 | 1.52 | 1.84 | 1.33 | 0.94 |
| 10364 | -17.96 | 1.32 | 1.46 | 4.03 | 1.22 | 0.93 |
| 10365 | — | — | — | — | — | — |
| 10366 | — | — | — | — | — | — |
| 10367 | -18.13 | 1.33 | 1.47 | 3.71 | 1.23 | 0.93 |
| 10368 | -18.83 | 1.38 | 1.52 | 2.17 | 1.26 | 0.92 |
| 10369 | -18.18 | 1.42 | 1.56 | 1.55 | 1.31 | 0.92 |
| 10370 | -18.02 | 1.42 | 1.56 | 1.59 | 1.31 | 0.93 |
| 10371 | -17.84 | 1.42 | 1.56 | 1.63 | 1.31 | 0.93 |
| 10372 | -17.66 | 1.42 | 1.56 | 1.67 | 1.32 | 0.93 |
| 10373 | -17.48 | 1.42 | 1.55 | 1.72 | 1.32 | 0.93 |
| 10374 | -17.29 | 1.42 | 1.55 | 1.77 | 1.32 | 0.93 |
| 10375 | -17.10 | 1.42 | 1.55 | 1.82 | 1.33 | 0.93 |

[Table 687]

| 10376 | -16.90 | 1.42 | 1.54 | 1.85 | 1.33 | 0.94 |
|---|---|---|---|---|---|---|
| 10377 | -16.71 | 1.41 | 1.53 | 1.88 | 1.33 | 0.94 |
| 10378 | -16.53 | 1.41 | 1.53 | 1.89 | 1.33 | 0.94 |
| 10379 | -16.34 | 1.40 | 1.52 | 1.87 | 1.33 | 0.94 |
| 10380 | -19.17 | 1.29 | 1.43 | 6.44 | 1.21 | 0.95 |
| 10381 | — | — | — | — | — | — |
| 10382 | — | — | — | — | — | — |
| 10383 | -19.35 | 1.30 | 1.45 | 6.09 | 1.21 | 0.95 |
| 10384 | -20.32 | 1.36 | 1.52 | 4.17 | 1.25 | 0.93 |
| 10385 | -20.77 | 1.44 | 1.61 | 2.45 | 1.30 | 0.92 |
| 10386 | -20.71 | 1.45 | 1.61 | 2.40 | 1.30 | 0.92 |
| 10387 | -20.64 | 1.45 | 1.61 | 2.37 | 1.31 | 0.92 |
| 10388 | -20.55 | 1.46 | 1.62 | 2.35 | 1.31 | 0.92 |
| 10389 | -20.45 | 1.46 | 1.62 | 2.35 | 1.32 | 0.92 |
| 10390 | -20.33 | 1.46 | 1.62 | 2.35 | 1.32 | 0.92 |
| 10391 | -20.21 | 1.46 | 1.62 | 2.37 | 1.32 | 0.92 |
| 10392 | -20.09 | 1.46 | 1.62 | 2.38 | 1.33 | 0.92 |
| 10393 | -19.95 | 1.46 | 1.61 | 2.40 | 1.33 | 0.92 |
| 10394 | -19.82 | 1.46 | 1.61 | 2.41 | 1.33 | 0.93 |
| 10395 | -19.69 | 1.46 | 1.60 | 2.41 | 1.33 | 0.93 |
| 10396 | -18.81 | 1.30 | 1.45 | 6.23 | 1.22 | 0.95 |
| 10397 | — | — | — | — | — | — |
| 10398 | — | — | — | — | — | — |
| 10399 | -18.99 | 1.32 | 1.46 | 5.87 | 1.22 | 0.94 |
| 10400 | -19.96 | 1.38 | 1.53 | 3.95 | 1.26 | 0.93 |
| 10401 | -20.31 | 1.45 | 1.61 | 2.33 | 1.31 | 0.92 |
| 10402 | -20.24 | 1.45 | 1.61 | 2.29 | 1.31 | 0.92 |
| 10403 | -20.15 | 1.46 | 1.62 | 2.27 | 1.32 | 0.92 |
| 10404 | -20.05 | 1.46 | 1.62 | 2.26 | 1.32 | 0.92 |
| 10405 | -19.94 | 1.46 | 1.62 | 2.26 | 1.32 | 0.92 |
| 10406 | -19.81 | 1.46 | 1.62 | 2.27 | 1.33 | 0.92 |
| 10407 | -19.68 | 1.47 | 1.62 | 2.29 | 1.33 | 0.92 |
| 10408 | -19.54 | 1.47 | 1.62 | 2.30 | 1.33 | 0.92 |
| 10409 | -19.40 | 1.46 | 1.61 | 2.32 | 1.34 | 0.92 |
| 10410 | -19.26 | 1.46 | 1.61 | 2.33 | 1.34 | 0.93 |
| 10411 | -19.12 | 1.46 | 1.60 | 2.33 | 1.34 | 0.93 |
| 10412 | -18.26 | 1.32 | 1.47 | 5.79 | 1.23 | 0.94 |
| 10413 | — | — | — | — | — | — |
| 10414 | — | — | — | — | — | — |
| 10415 | -18.45 | 1.33 | 1.48 | 5.44 | 1.23 | 0.94 |
| 10416 | -19.39 | 1.39 | 1.55 | 3.56 | 1.27 | 0.93 |
| 10417 | -19.52 | 1.46 | 1.62 | 2.15 | 1.32 | 0.92 |
| 10418 | -19.43 | 1.46 | 1.62 | 2.13 | 1.32 | 0.92 |
| 10419 | -19.32 | 1.46 | 1.62 | 2.12 | 1.33 | 0.92 |
| 10420 | -19.19 | 1.47 | 1.62 | 2.13 | 1.33 | 0.92 |
| 10421 | -19.06 | 1.47 | 1.62 | 2.14 | 1.34 | 0.92 |
| 10422 | -18.92 | 1.47 | 1.62 | 2.16 | 1.34 | 0.92 |
| 10423 | -18.77 | 1.47 | 1.62 | 2.19 | 1.34 | 0.92 |
| 10424 | -18.61 | 1.47 | 1.61 | 2.21 | 1.34 | 0.92 |
| 10425 | -18.45 | 1.46 | 1.61 | 2.23 | 1.35 | 0.93 |

[Table 688]

| | | | | | | |
|---|---|---|---|---|---|---|
| 10426 | -18.29 | 1.46 | 1.60 | 2.25 | 1.35 | 0.93 |
| 10427 | -18.14 | 1.46 | 1.59 | 2.25 | 1.35 | 0.93 |
| 10428 | -17.78 | 1.34 | 1.48 | 5.29 | 1.24 | 0.93 |
| 10429 | — | — | — | — | — | — |
| 10430 | — | — | — | — | — | — |
| 10431 | -17.96 | 1.35 | 1.49 | 4.93 | 1.25 | 0.93 |
| 10432 | -18.85 | 1.40 | 1.56 | 3.14 | 1.28 | 0.92 |
| 10433 | -18.70 | 1.46 | 1.62 | 2.01 | 1.33 | 0.92 |
| 10434 | -18.57 | 1.46 | 1.62 | 2.01 | 1.33 | 0.92 |
| 10435 | -18.44 | 1.46 | 1.62 | 2.03 | 1.34 | 0.92 |
| 10436 | -18.29 | 1.47 | 1.62 | 2.05 | 1.34 | 0.92 |
| 10437 | -18.13 | 1.47 | 1.62 | 2.08 | 1.35 | 0.92 |
| 10438 | -17.97 | 1.47 | 1.61 | 2.11 | 1.35 | 0.92 |
| 10439 | -17.80 | 1.47 | 1.61 | 2.15 | 1.35 | 0.93 |
| 10440 | -17.62 | 1.46 | 1.61 | 2.18 | 1.35 | 0.93 |
| 10441 | -17.45 | 1.46 | 1.60 | 2.21 | 1.36 | 0.93 |
| 10442 | -17.27 | 1.46 | 1.59 | 2.22 | 1.36 | 0.93 |
| 10443 | -17.10 | 1.45 | 1.58 | 2.22 | 1.36 | 0.94 |
| 10444 | -17.35 | 1.35 | 1.49 | 4.73 | 1.25 | 0.93 |
| 10445 | — | — | — | — | — | — |
| 10446 | -17.53 | 1.36 | 1.51 | 4.39 | 1.26 | 0.93 |
| 10447 | -18.31 | 1.41 | 1.57 | 2.75 | 1.29 | 0.92 |
| 10448 | -17.81 | 1.46 | 1.61 | 1.94 | 1.34 | 0.92 |
| 10449 | -17.66 | 1.46 | 1.61 | 1.97 | 1.34 | 0.92 |
| 10450 | -17.50 | 1.46 | 1.61 | 2.00 | 1.35 | 0.92 |
| 10451 | -17.32 | 1.46 | 1.61 | 2.04 | 1.35 | 0.93 |
| 10452 | -17.14 | 1.46 | 1.61 | 2.09 | 1.35 | 0.93 |
| 10453 | -16.95 | 1.46 | 1.60 | 2.13 | 1.36 | 0.93 |
| 10454 | -16.76 | 1.46 | 1.60 | 2.18 | 1.36 | 0.93 |
| 10455 | -16.57 | 1.46 | 1.59 | 2.22 | 1.36 | 0.93 |
| 10456 | -16.37 | 1.45 | 1.59 | 2.24 | 1.36 | 0.94 |
| 10457 | -16.18 | 1.45 | 1.58 | 2.26 | 1.36 | 0.94 |
| 10458 | -16.00 | 1.44 | 1.57 | 2.26 | 1.37 | 0.94 |
| 10459 | -17.00 | 1.35 | 1.49 | 4.85 | 1.25 | 0.93 |
| 10460 | — | — | — | — | — | — |
| 10461 | -17.19 | 1.36 | 1.50 | 4.50 | 1.25 | 0.93 |
| 10462 | -18.09 | 1.41 | 1.57 | 2.60 | 1.30 | 0.92 |
| 10463 | -17.44 | 1.46 | 1.61 | 1.94 | 1.34 | 0.92 |
| 10464 | -17.28 | 1.46 | 1.61 | 1.97 | 1.35 | 0.92 |
| 10465 | -17.10 | 1.46 | 1.61 | 2.01 | 1.35 | 0.93 |
| 10466 | -16.92 | 1.46 | 1.60 | 2.06 | 1.35 | 0.93 |
| 10467 | -16.73 | 1.46 | 1.60 | 2.11 | 1.36 | 0.93 |
| 10468 | -16.53 | 1.46 | 1.60 | 2.16 | 1.36 | 0.93 |
| 10469 | -16.33 | 1.46 | 1.59 | 2.21 | 1.36 | 0.93 |
| 10470 | -16.13 | 1.46 | 1.59 | 2.25 | 1.36 | 0.94 |
| 10471 | -15.93 | 1.45 | 1.58 | 2.28 | 1.37 | 0.94 |
| 10472 | -15.73 | 1.45 | 1.57 | 2.30 | 1.37 | 0.94 |
| 10473 | -15.54 | 1.44 | 1.56 | 2.29 | 1.37 | 0.94 |
| 10474 | -23.27 | 1.10 | 1.20 | 3.81 | 1.02 | 0.94 |
| 10475 | — | — | — | — | — | — |

[Table 689]

| | | | | | | |
|---|---|---|---|---|---|---|
| 10476 | — | — | — | — | — | — |
| 10477 | -23.42 | 1.11 | 1.21 | 3.51 | 1.02 | 0.94 |
| 10478 | -24.00 | 1.14 | 1.25 | 2.33 | 1.04 | 0.93 |
| 10479 | -24.65 | 1.21 | 1.32 | 0.49 | 1.09 | 0.92 |
| 10480 | -24.62 | 1.22 | 1.33 | 0.41 | 1.09 | 0.92 |
| 10481 | -24.58 | 1.22 | 1.33 | 0.36 | 1.09 | 0.92 |
| 10482 | -24.53 | 1.22 | 1.33 | 0.31 | 1.10 | 0.92 |
| 10483 | -24.47 | 1.22 | 1.33 | 0.28 | 1.10 | 0.92 |
| 10484 | -24.40 | 1.22 | 1.33 | 0.25 | 1.10 | 0.92 |
| 10485 | -24.32 | 1.23 | 1.33 | 0.23 | 1.10 | 0.92 |
| 10486 | -24.23 | 1.23 | 1.33 | 0.21 | 1.11 | 0.92 |
| 10487 | -24.15 | 1.22 | 1.32 | 0.19 | 1.11 | 0.92 |
| 10488 | -24.06 | 1.22 | 1.32 | 0.17 | 1.11 | 0.93 |
| 10489 | -23.97 | 1.22 | 1.31 | 0.14 | 1.11 | 0.93 |
| 10490 | -22.65 | 1.12 | 1.22 | 3.91 | 1.03 | 0.94 |
| 10491 | — | — | — | — | — | — |
| 10492 | — | — | — | — | — | — |
| 10493 | -22.81 | 1.13 | 1.23 | 3.60 | 1.04 | 0.94 |
| 10494 | -23.40 | 1.16 | 1.27 | 2.40 | 1.06 | 0.93 |
| 10495 | -24.03 | 1.23 | 1.34 | 0.54 | 1.11 | 0.92 |
| 10496 | -24.00 | 1.23 | 1.35 | 0.46 | 1.11 | 0.92 |
| 10497 | -23.96 | 1.24 | 1.35 | 0.40 | 1.11 | 0.92 |
| 10498 | -23.90 | 1.24 | 1.35 | 0.36 | 1.12 | 0.92 |
| 10499 | -23.83 | 1.24 | 1.35 | 0.32 | 1.12 | 0.92 |
| 10500 | -23.75 | 1.24 | 1.35 | 0.29 | 1.12 | 0.92 |
| 10501 | -23.67 | 1.24 | 1.35 | 0.27 | 1.12 | 0.92 |
| 10502 | -23.58 | 1.24 | 1.35 | 0.25 | 1.13 | 0.92 |
| 10503 | -23.49 | 1.24 | 1.34 | 0.24 | 1.13 | 0.92 |
| 10504 | -23.39 | 1.24 | 1.34 | 0.21 | 1.13 | 0.92 |
| 10505 | -23.30 | 1.24 | 1.33 | 0.18 | 1.13 | 0.93 |
| 10506 | -21.59 | 1.14 | 1.24 | 4.22 | 1.05 | 0.94 |
| 10507 | — | — | — | — | — | — |
| 10508 | -21.75 | 1.15 | 1.25 | 3.90 | 1.06 | 0.94 |
| 10509 | -22.52 | 1.19 | 1.30 | 2.35 | 1.08 | 0.93 |
| 10510 | -23.08 | 1.26 | 1.37 | 0.51 | 1.13 | 0.92 |
| 10511 | -23.03 | 1.26 | 1.37 | 0.43 | 1.13 | 0.92 |
| 10512 | -22.98 | 1.26 | 1.37 | 0.38 | 1.14 | 0.92 |
| 10513 | -22.91 | 1.26 | 1.37 | 0.33 | 1.14 | 0.92 |
| 10514 | -22.83 | 1.27 | 1.37 | 0.30 | 1.14 | 0.92 |
| 10515 | -22.75 | 1.27 | 1.37 | 0.27 | 1.15 | 0.92 |
| 10516 | -22.65 | 1.27 | 1.37 | 0.25 | 1.15 | 0.92 |
| 10517 | -22.55 | 1.27 | 1.37 | 0.23 | 1.15 | 0.92 |
| 10518 | -22.44 | 1.27 | 1.37 | 0.21 | 1.15 | 0.92 |
| 10519 | -22.34 | 1.26 | 1.36 | 0.19 | 1.15 | 0.93 |
| 10520 | -22.23 | 1.26 | 1.36 | 0.15 | 1.15 | 0.93 |
| 10521 | -20.82 | 1.16 | 1.26 | 4.02 | 1.07 | 0.93 |
| 10522 | — | — | — | — | — | — |
| 10523 | — | — | — | — | — | — |
| 10524 | -20.99 | 1.17 | 1.27 | 3.68 | 1.08 | 0.93 |
| 10525 | -21.74 | 1.21 | 1.32 | 2.14 | 1.11 | 0.92 |

[Table 690]

| 10526 | -22.17 | 1.27 | 1.39 | 0.40 | 1.15 | 0.92 |
|---|---|---|---|---|---|---|
| 10527 | -22.12 | 1.28 | 1.39 | 0.33 | 1.16 | 0.92 |
| 10528 | -22.05 | 1.28 | 1.39 | 0.28 | 1.16 | 0.92 |
| 10529 | -21.96 | 1.28 | 1.39 | 0.25 | 1.16 | 0.92 |
| 10530 | -21.87 | 1.28 | 1.39 | 0.22 | 1.16 | 0.92 |
| 10531 | -21.77 | 1.28 | 1.39 | 0.20 | 1.17 | 0.92 |
| 10532 | -21.66 | 1.28 | 1.39 | 0.18 | 1.17 | 0.92 |
| 10533 | -21.54 | 1.28 | 1.38 | 0.16 | 1.17 | 0.92 |
| 10534 | -21.42 | 1.28 | 1.38 | 0.14 | 1.17 | 0.92 |
| 10535 | -21.30 | 1.28 | 1.38 | 0.11 | 1.17 | 0.93 |
| 10536 | -21.18 | 1.27 | 1.37 | 0.08 | 1.17 | 0.93 |
| 10537 | -20.16 | 1.18 | 1.28 | 3.66 | 1.09 | 0.93 |
| 10538 | — | — | — | — | — | — |
| 10539 | — | — | — | — | — | — |
| 10540 | -20.33 | 1.19 | 1.29 | 3.33 | 1.09 | 0.93 |
| 10541 | -21.06 | 1.23 | 1.34 | 1.83 | 1.12 | 0.92 |
| 10542 | -21.30 | 1.28 | 1.40 | 0.27 | 1.17 | 0.92 |
| 10543 | -21.20 | 1.29 | 1.40 | 0.22 | 1.17 | 0.92 |
| 10544 | -21.11 | 1.29 | 1.40 | 0.19 | 1.18 | 0.92 |
| 10545 | -21.01 | 1.29 | 1.40 | 0.16 | 1.18 | 0.92 |
| 10546 | -20.89 | 1.29 | 1.40 | 0.14 | 1.18 | 0.92 |
| 10547 | -20.77 | 1.29 | 1.40 | 0.13 | 1.18 | 0.92 |
| 10548 | -20.64 | 1.29 | 1.39 | 0.12 | 1.19 | 0.92 |
| 10549 | -20.51 | 1.29 | 1.39 | 0.10 | 1.19 | 0.93 |
| 10550 | -20.38 | 1.29 | 1.39 | 0.09 | 1.19 | 0.93 |
| 10551 | -20.24 | 1.29 | 1.38 | 0.06 | 1.19 | 0.93 |
| 10552 | -20.10 | 1.28 | 1.37 | 0.03 | 1.19 | 0.93 |
| 10553 | -19.93 | 1.19 | 1.29 | 3.49 | 1.10 | 0.93 |
| 10554 | — | — | — | — | — | — |
| 10555 | — | — | — | — | — | — |
| 10556 | -20.09 | 1.20 | 1.30 | 3.16 | 1.10 | 0.93 |
| 10557 | -20.80 | 1.24 | 1.35 | 1.68 | 1.13 | 0.92 |
| 10558 | -20.92 | 1.29 | 1.40 | 0.23 | 1.17 | 0.92 |
| 10559 | -20.84 | 1.29 | 1.40 | 0.19 | 1.18 | 0.92 |
| 10560 | -20.73 | 1.29 | 1.40 | 0.16 | 1.18 | 0.92 |
| 10561 | -20.62 | 1.29 | 1.40 | 0.14 | 1.18 | 0.92 |
| 10562 | -20.49 | 1.29 | 1.40 | 0.12 | 1.19 | 0.92 |
| 10563 | -20.36 | 1.29 | 1.40 | 0.11 | 1.19 | 0.92 |
| 10564 | -20.23 | 1.29 | 1.39 | 0.11 | 1.19 | 0.93 |
| 10565 | -20.09 | 1.29 | 1.39 | 0.09 | 1.19 | 0.93 |
| 10566 | -19.94 | 1.29 | 1.39 | 0.08 | 1.19 | 0.93 |
| 10567 | -19.80 | 1.29 | 1.38 | 0.05 | 1.20 | 0.93 |
| 10568 | -19.65 | 1.28 | 1.37 | 0.02 | 1.20 | 0.93 |
| 10569 | -22.23 | 1.05 | 1.13 | 5.58 | 0.99 | 0.96 |
| 10570 | — | — | — | — | — | — |
| 10571 | -22.36 | 1.06 | 1.14 | 5.28 | 0.99 | 0.96 |
| 10572 | -23.23 | 1.11 | 1.21 | 3.44 | 1.02 | 0.94 |
| 10573 | -24.20 | 1.19 | 1.29 | 1.11 | 1.07 | 0.92 |
| 10574 | -24.21 | 1.19 | 1.30 | 0.98 | 1.08 | 0.92 |
| 10575 | -24.20 | 1.19 | 1.30 | 0.87 | 1.08 | 0.92 |

[Table 691]

| | | | | | | |
|---|---|---|---|---|---|---|
| 10576 | -24.19 | 1.20 | 1.30 | 0.78 | 1.08 | 0.92 |
| 10577 | -24.15 | 1.20 | 1.30 | 0.70 | 1.09 | 0.92 |
| 10578 | -24.11 | 1.20 | 1.31 | 0.64 | 1.09 | 0.92 |
| 10579 | -24.06 | 1.21 | 1.31 | 0.58 | 1.09 | 0.93 |
| 10580 | -23.99 | 1.21 | 1.31 | 0.53 | 1.09 | 0.93 |
| 10581 | -23.93 | 1.21 | 1.30 | 0.49 | 1.10 | 0.93 |
| 10582 | -23.85 | 1.20 | 1.30 | 0.44 | 1.10 | 0.93 |
| 10583 | -23.78 | 1.20 | 1.29 | 0.39 | 1.10 | 0.93 |
| 10584 | -21.56 | 1.07 | 1.16 | 5.73 | 1.01 | 0.96 |
| 10585 | — | — | — | — | — | — |
| 10586 | — | — | — | — | — | — |
| 10587 | -21.70 | 1.08 | 1.17 | 5.42 | 1.01 | 0.95 |
| 10588 | -22.59 | 1.13 | 1.23 | 3.52 | 1.04 | 0.94 |
| 10589 | -23.55 | 1.21 | 1.31 | 1.16 | 1.09 | 0.92 |
| 10590 | -23.56 | 1.21 | 1.32 | 1.03 | 1.10 | 0.92 |
| 10591 | -23.55 | 1.21 | 1.32 | 0.92 | 1.10 | 0.92 |
| 10592 | -23.53 | 1.22 | 1.32 | 0.82 | 1.10 | 0.92 |
| 10593 | -23.49 | 1.22 | 1.33 | 0.75 | 1.11 | 0.92 |
| 10594 | -23.44 | 1.22 | 1.33 | 0.68 | 1.11 | 0.92 |
| 10595 | -23.39 | 1.22 | 1.33 | 0.62 | 1.11 | 0.92 |
| 10596 | -23.32 | 1.22 | 1.33 | 0.57 | 1.11 | 0.93 |
| 10597 | -23.24 | 1.22 | 1.32 | 0.52 | 1.12 | 0.93 |
| 10598 | -23.16 | 1.22 | 1.32 | 0.48 | 1.12 | 0.93 |
| 10599 | -23.08 | 1.22 | 1.31 | 0.42 | 1.12 | 0.93 |
| 10600 | -20.58 | 1.10 | 1.19 | 5.77 | 1.03 | 0.95 |
| 10601 | — | — | — | — | — | — |
| 10602 | — | — | — | — | — | — |
| 10603 | -20.73 | 1.11 | 1.20 | 5.45 | 1.03 | 0.95 |
| 10604 | -21.66 | 1.16 | 1.26 | 3.46 | 1.07 | 0.93 |
| 10605 | -22.58 | 1.23 | 1.34 | 1.10 | 1.12 | 0.92 |
| 10606 | -22.58 | 1.24 | 1.34 | 0.97 | 1.12 | 0.92 |
| 10607 | -22.56 | 1.24 | 1.35 | 0.86 | 1.13 | 0.92 |
| 10608 | -22.52 | 1.24 | 1.35 | 0.77 | 1.13 | 0.92 |
| 10609 | -22.47 | 1.25 | 1.35 | 0.70 | 1.13 | 0.92 |
| 10610 | -22.42 | 1.25 | 1.35 | 0.63 | 1.14 | 0.92 |
| 10611 | -22.34 | 1.25 | 1.35 | 0.58 | 1.14 | 0.92 |
| 10612 | -22.26 | 1.25 | 1.35 | 0.53 | 1.14 | 0.93 |
| 10613 | -22.17 | 1.25 | 1.35 | 0.48 | 1.14 | 0.93 |
| 10614 | -22.08 | 1.25 | 1.34 | 0.43 | 1.14 | 0.93 |
| 10615 | -21.98 | 1.24 | 1.34 | 0.38 | 1.14 | 0.93 |
| 10616 | -19.76 | 1.12 | 1.21 | 5.58 | 1.05 | 0.95 |
| 10617 | — | — | — | — | — | — |
| 10618 | — | — | — | — | — | — |
| 10619 | -19.91 | 1.13 | 1.22 | 5.24 | 1.05 | 0.94 |
| 10620 | -20.87 | 1.19 | 1.29 | 3.22 | 1.09 | 0.93 |
| 10621 | -21.68 | 1.25 | 1.36 | 0.93 | 1.14 | 0.92 |
| 10622 | -21.66 | 1.26 | 1.36 | 0.82 | 1.14 | 0.92 |
| 10623 | -21.63 | 1.26 | 1.37 | 0.72 | 1.15 | 0.92 |
| 10624 | -21.58 | 1.26 | 1.37 | 0.64 | 1.15 | 0.92 |
| 10625 | -21.51 | 1.26 | 1.37 | 0.57 | 1.15 | 0.92 |

[Table 692]

| | | | | | |
|---|---|---|---|---|---|
| 10626 | -21.43 | 1.26 | 1.37 | 0.52 | 1.16 | 0.92 |
| 10627 | -21.34 | 1.27 | 1.37 | 0.47 | 1.16 | 0.93 |
| 10628 | -21.24 | 1.27 | 1.37 | 0.42 | 1.16 | 0.93 |
| 10629 | -21.14 | 1.26 | 1.36 | 0.38 | 1.16 | 0.93 |
| 10630 | -21.03 | 1.26 | 1.36 | 0.33 | 1.16 | 0.93 |
| 10631 | -20.92 | 1.26 | 1.35 | 0.28 | 1.17 | 0.93 |
| 10632 | -19.06 | 1.14 | 1.23 | 5.20 | 1.07 | 0.94 |
| 10633 | – | – | – | – | – | – |
| 10634 | – | – | – | – | – | – |
| 10635 | -19.22 | 1.15 | 1.24 | 4.85 | 1.07 | 0.94 |
| 10636 | -20.18 | 1.20 | 1.30 | 2.84 | 1.11 | 0.93 |
| 10637 | -20.81 | 1.26 | 1.37 | 0.73 | 1.16 | 0.92 |
| 10638 | -20.77 | 1.27 | 1.37 | 0.64 | 1.16 | 0.92 |
| 10639 | -20.71 | 1.27 | 1.38 | 0.56 | 1.16 | 0.92 |
| 10640 | -20.63 | 1.27 | 1.38 | 0.49 | 1.17 | 0.92 |
| 10641 | -20.56 | 1.27 | 1.38 | 0.44 | 1.17 | 0.93 |
| 10642 | -20.44 | 1.27 | 1.38 | 0.40 | 1.17 | 0.93 |
| 10643 | -20.33 | 1.27 | 1.37 | 0.36 | 1.18 | 0.93 |
| 10644 | -20.21 | 1.27 | 1.37 | 0.32 | 1.18 | 0.93 |
| 10645 | -20.09 | 1.27 | 1.37 | 0.28 | 1.18 | 0.93 |
| 10646 | -19.96 | 1.27 | 1.36 | 0.24 | 1.18 | 0.93 |
| 10647 | -19.83 | 1.27 | 1.36 | 0.19 | 1.18 | 0.93 |
| 10648 | -18.81 | 1.15 | 1.24 | 5.01 | 1.07 | 0.94 |
| 10649 | – | – | – | – | – | – |
| 10650 | – | – | – | – | – | – |
| 10651 | -18.97 | 1.16 | 1.25 | 4.66 | 1.08 | 0.94 |
| 10652 | -19.93 | 1.21 | 1.31 | 2.66 | 1.11 | 0.93 |
| 10653 | -20.46 | 1.27 | 1.37 | 0.66 | 1.16 | 0.92 |
| 10654 | -20.41 | 1.27 | 1.38 | 0.57 | 1.17 | 0.93 |
| 10655 | -20.33 | 1.27 | 1.38 | 0.50 | 1.17 | 0.93 |
| 10656 | -20.25 | 1.27 | 1.38 | 0.44 | 1.17 | 0.93 |
| 10657 | -20.15 | 1.28 | 1.38 | 0.40 | 1.18 | 0.93 |
| 10658 | -20.03 | 1.28 | 1.38 | 0.36 | 1.18 | 0.93 |
| 10659 | -19.91 | 1.28 | 1.38 | 0.32 | 1.18 | 0.93 |
| 10660 | -19.78 | 1.28 | 1.37 | 0.29 | 1.18 | 0.93 |
| 10661 | -19.65 | 1.27 | 1.37 | 0.26 | 1.19 | 0.93 |
| 10662 | -19.51 | 1.27 | 1.36 | 0.22 | 1.19 | 0.93 |
| 10663 | -19.37 | 1.27 | 1.36 | 0.17 | 1.19 | 0.94 |
| 10664 | -20.67 | 0.95 | 1.03 | 8.35 | 0.94 | 1.00 |
| 10665 | – | – | – | – | – | – |
| 10666 | – | – | – | – | – | – |
| 10667 | -20.73 | 0.96 | 1.04 | 8.13 | 0.94 | 0.99 |
| 10668 | -21.51 | 1.04 | 1.12 | 5.97 | 0.98 | 0.96 |
| 10669 | -22.83 | 1.13 | 1.22 | 2.95 | 1.04 | 0.94 |
| 10670 | -22.92 | 1.13 | 1.22 | 2.70 | 1.04 | 0.94 |
| 10671 | -23.00 | 1.14 | 1.23 | 2.47 | 1.05 | 0.93 |
| 10672 | -23.07 | 1.14 | 1.24 | 2.27 | 1.05 | 0.93 |
| 10673 | -23.12 | 1.15 | 1.24 | 2.08 | 1.05 | 0.93 |
| 10674 | -23.15 | 1.15 | 1.25 | 1.90 | 1.06 | 0.93 |
| 10675 | -23.17 | 1.16 | 1.25 | 1.75 | 1.06 | 0.93 |

[Table 693]

| | | | | | | |
|---|---|---|---|---|---|---|
| 10676 | -23.17 | 1.16 | 1.25 | 1.60 | 1.06 | 0.93 |
| 10677 | -23.16 | 1.16 | 1.25 | 1.47 | 1.07 | 0.94 |
| 10678 | -23.15 | 1.16 | 1.25 | 1.34 | 1.07 | 0.94 |
| 10679 | -23.12 | 1.16 | 1.25 | 1.22 | 1.07 | 0.94 |
| 10680 | -19.87 | 0.98 | 1.05 | 8.65 | 0.96 | 0.99 |
| 10681 | – | – | – | – | – | – |
| 10682 | – | – | – | – | – | – |
| 10683 | -19.94 | 0.99 | 1.06 | 8.42 | 0.96 | 0.99 |
| 10684 | -20.77 | 1.06 | 1.14 | 6.11 | 1.00 | 0.96 |
| 10685 | -22.13 | 1.15 | 1.24 | 2.99 | 1.06 | 0.93 |
| 10686 | -22.22 | 1.15 | 1.25 | 2.74 | 1.06 | 0.93 |
| 10687 | -22.30 | 1.16 | 1.25 | 2.51 | 1.07 | 0.93 |
| 10688 | -22.36 | 1.17 | 1.26 | 2.30 | 1.07 | 0.93 |
| 10689 | -22.41 | 1.17 | 1.26 | 2.11 | 1.07 | 0.93 |
| 10690 | -22.43 | 1.17 | 1.27 | 1.94 | 1.08 | 0.93 |
| 10691 | -22.44 | 1.18 | 1.27 | 1.78 | 1.08 | 0.93 |
| 10692 | -22.44 | 1.18 | 1.27 | 1.64 | 1.09 | 0.93 |
| 10693 | -22.43 | 1.18 | 1.27 | 1.50 | 1.09 | 0.93 |
| 10694 | -22.40 | 1.18 | 1.27 | 1.38 | 1.09 | 0.94 |
| 10695 | -22.37 | 1.18 | 1.27 | 1.25 | 1.09 | 0.94 |
| 10696 | -18.73 | 1.01 | 1.08 | 8.87 | 0.98 | 0.99 |
| 10697 | – | – | – | – | – | – |
| 10698 | -18.81 | 1.02 | 1.09 | 8.60 | 0.99 | 0.98 |
| 10699 | -19.72 | 1.10 | 1.18 | 6.09 | 1.03 | 0.95 |
| 10700 | -21.10 | 1.18 | 1.27 | 2.87 | 1.08 | 0.93 |
| 10701 | -21.19 | 1.18 | 1.28 | 2.62 | 1.09 | 0.93 |
| 10702 | -21.26 | 1.19 | 1.28 | 2.39 | 1.09 | 0.93 |
| 10703 | -21.31 | 1.19 | 1.29 | 2.19 | 1.10 | 0.93 |
| 10704 | -21.34 | 1.20 | 1.29 | 2.00 | 1.10 | 0.93 |
| 10705 | -21.35 | 1.20 | 1.30 | 1.83 | 1.11 | 0.93 |
| 10706 | -21.36 | 1.20 | 1.30 | 1.67 | 1.11 | 0.93 |
| 10707 | -21.34 | 1.21 | 1.30 | 1.53 | 1.11 | 0.93 |
| 10708 | -21.31 | 1.21 | 1.30 | 1.40 | 1.12 | 0.93 |
| 10709 | -21.27 | 1.21 | 1.30 | 1.28 | 1.12 | 0.94 |
| 10710 | -21.22 | 1.21 | 1.30 | 1.15 | 1.12 | 0.94 |
| 10711 | -17.70 | 1.02 | 1.10 | 9.05 | 1.00 | 0.98 |
| 10712 | – | – | – | – | – | – |
| 10713 | -17.78 | 1.03 | 1.11 | 8.77 | 1.00 | 0.98 |
| 10714 | -18.84 | 1.12 | 1.20 | 5.80 | 1.05 | 0.94 |
| 10715 | -20.20 | 1.20 | 1.29 | 2.57 | 1.11 | 0.93 |
| 10716 | -20.28 | 1.21 | 1.30 | 2.33 | 1.11 | 0.93 |
| 10717 | -20.33 | 1.21 | 1.30 | 2.12 | 1.12 | 0.93 |
| 10718 | -20.36 | 1.21 | 1.31 | 1.92 | 1.12 | 0.93 |
| 10719 | -20.38 | 1.22 | 1.31 | 1.74 | 1.13 | 0.93 |
| 10720 | -20.37 | 1.22 | 1.31 | 1.59 | 1.13 | 0.93 |
| 10721 | -20.35 | 1.22 | 1.32 | 1.44 | 1.13 | 0.93 |
| 10722 | -20.31 | 1.22 | 1.32 | 1.31 | 1.14 | 0.93 |
| 10723 | -20.26 | 1.23 | 1.32 | 1.19 | 1.14 | 0.94 |
| 10724 | -20.20 | 1.23 | 1.31 | 1.07 | 1.14 | 0.94 |
| 10725 | -20.13 | 1.22 | 1.31 | 0.96 | 1.14 | 0.94 |

[Table 694]

| | | | | | | |
|---|---|---|---|---|---|---|
| 10726 | -16.87 | 1.05 | 1.12 | 8.72 | 1.01 | 0.97 |
| 10727 | — | — | — | — | — | — |
| 10728 | — | — | — | — | — | — |
| 10729 | -16.96 | 1.05 | 1.13 | 8.42 | 1.02 | 0.97 |
| 10730 | -18.10 | 1.14 | 1.22 | 5.32 | 1.07 | 0.94 |
| 10731 | -19.39 | 1.21 | 1.31 | 2.18 | 1.13 | 0.93 |
| 10732 | -19.44 | 1.22 | 1.31 | 1.96 | 1.13 | 0.93 |
| 10733 | -19.47 | 1.22 | 1.32 | 1.77 | 1.14 | 0.93 |
| 10734 | -19.47 | 1.23 | 1.32 | 1.59 | 1.14 | 0.93 |
| 10735 | -19.46 | 1.23 | 1.32 | 1.44 | 1.15 | 0.93 |
| 10736 | -19.42 | 1.23 | 1.33 | 1.30 | 1.15 | 0.94 |
| 10737 | -19.37 | 1.23 | 1.33 | 1.18 | 1.15 | 0.94 |
| 10738 | -19.31 | 1.24 | 1.33 | 1.06 | 1.16 | 0.94 |
| 10739 | -19.23 | 1.24 | 1.32 | 0.95 | 1.16 | 0.94 |
| 10740 | -19.14 | 1.23 | 1.32 | 0.85 | 1.16 | 0.94 |
| 10741 | -19.04 | 1.23 | 1.32 | 0.75 | 1.16 | 0.94 |
| 10742 | -16.58 | 1.05 | 1.12 | 8.53 | 1.02 | 0.97 |
| 10743 | — | — | — | — | — | — |
| 10744 | — | — | — | — | — | — |
| 10745 | -16.67 | 1.06 | 1.14 | 8.22 | 1.02 | 0.97 |
| 10746 | -17.83 | 1.15 | 1.23 | 5.08 | 1.07 | 0.94 |
| 10747 | -19.07 | 1.22 | 1.31 | 2.01 | 1.13 | 0.93 |
| 10748 | -19.11 | 1.22 | 1.32 | 1.81 | 1.14 | 0.93 |
| 10749 | -19.12 | 1.23 | 1.32 | 1.62 | 1.14 | 0.93 |
| 10750 | -19.12 | 1.23 | 1.32 | 1.46 | 1.15 | 0.94 |
| 10751 | -19.09 | 1.23 | 1.33 | 1.32 | 1.15 | 0.94 |
| 10752 | -19.04 | 1.24 | 1.33 | 1.19 | 1.16 | 0.94 |
| 10753 | -18.98 | 1.24 | 1.33 | 1.08 | 1.16 | 0.94 |
| 10754 | -18.90 | 1.24 | 1.33 | 0.97 | 1.16 | 0.94 |
| 10755 | -18.80 | 1.24 | 1.33 | 0.87 | 1.16 | 0.94 |
| 10756 | -18.70 | 1.24 | 1.32 | 0.77 | 1.17 | 0.94 |
| 10757 | -18.59 | 1.23 | 1.32 | 0.68 | 1.17 | 0.94 |
| 10758 | -19.59 | 0.85 | 0.92 | 10.46 | 0.88 | 1.05 |
| 10759 | — | — | — | — | — | — |
| 10760 | — | — | — | — | — | — |
| 10761 | -19.57 | 0.86 | 0.93 | 10.41 | 0.89 | 1.04 |
| 10762 | -19.55 | 0.87 | 0.93 | 10.34 | 0.89 | 1.04 |
| 10763 | -19.79 | 0.96 | 1.03 | 8.68 | 0.94 | 0.99 |
| 10764 | -20.85 | 1.06 | 1.13 | 5.64 | 0.99 | 0.95 |
| 10765 | -20.98 | 1.06 | 1.14 | 5.31 | 1.00 | 0.95 |
| 10766 | -21.11 | 1.07 | 1.15 | 4.99 | 1.00 | 0.95 |
| 10767 | -21.24 | 1.08 | 1.15 | 4.68 | 1.01 | 0.95 |
| 10768 | -21.36 | 1.08 | 1.16 | 4.37 | 1.01 | 0.95 |
| 10769 | -21.47 | 1.09 | 1.17 | 4.08 | 1.02 | 0.94 |
| 10770 | -21.57 | 1.10 | 1.17 | 3.80 | 1.02 | 0.94 |
| 10771 | -21.66 | 1.10 | 1.18 | 3.53 | 1.03 | 0.94 |
| 10772 | -21.74 | 1.10 | 1.18 | 3.27 | 1.03 | 0.94 |
| 10773 | -21.81 | 1.11 | 1.18 | 3.02 | 1.03 | 0.94 |
| 10774 | -21.86 | 1.11 | 1.18 | 2.79 | 1.03 | 0.95 |
| 10775 | -18.64 | 0.87 | 0.94 | 11.04 | 0.90 | 1.04 |

[Table 695]

| 10776 | – | – | – | – | – | – |
|---|---|---|---|---|---|---|
| 10777 | – | – | – | – | – | – |
| 10778 | -18.63 | 0.88 | 0.95 | 10.96 | 0.91 | 1.04 |
| 10779 | -18.62 | 0.89 | 0.96 | 10.86 | 0.91 | 1.03 |
| 10780 | -18.93 | 0.99 | 1.05 | 8.93 | 0.96 | 0.98 |
| 10781 | -20.04 | 1.08 | 1.15 | 5.72 | 1.01 | 0.95 |
| 10782 | -20.18 | 1.09 | 1.16 | 5.38 | 1.02 | 0.95 |
| 10783 | -20.31 | 1.09 | 1.17 | 5.05 | 1.02 | 0.95 |
| 10784 | -20.44 | 1.10 | 1.18 | 4.73 | 1.03 | 0.94 |
| 10785 | -20.56 | 1.11 | 1.18 | 4.42 | 1.03 | 0.94 |
| 10786 | -20.67 | 1.11 | 1.19 | 4.12 | 1.04 | 0.94 |
| 10787 | -20.77 | 1.12 | 1.20 | 3.83 | 1.04 | 0.94 |
| 10788 | -20.86 | 1.12 | 1.20 | 3.56 | 1.05 | 0.94 |
| 10789 | -20.94 | 1.13 | 1.20 | 3.30 | 1.05 | 0.94 |
| 10790 | -21.00 | 1.13 | 1.21 | 3.05 | 1.06 | 0.94 |
| 10791 | -21.04 | 1.13 | 1.21 | 2.81 | 1.06 | 0.94 |
| 10792 | -17.29 | 0.91 | 0.98 | 11.62 | 0.93 | 1.04 |
| 10793 | – | – | – | – | – | – |
| 10794 | – | – | – | – | – | – |
| 10795 | -17.29 | 0.92 | 0.98 | 11.49 | 0.94 | 1.03 |
| 10796 | -17.29 | 0.92 | 0.99 | 11.35 | 0.94 | 1.03 |
| 10797 | -17.70 | 1.02 | 1.09 | 9.02 | 0.99 | 0.98 |
| 10798 | -18.90 | 1.11 | 1.18 | 5.56 | 1.04 | 0.94 |
| 10799 | -19.04 | 1.12 | 1.19 | 5.21 | 1.05 | 0.94 |
| 10800 | -19.18 | 1.13 | 1.20 | 4.87 | 1.05 | 0.94 |
| 10801 | -19.30 | 1.13 | 1.21 | 4.54 | 1.06 | 0.94 |
| 10802 | -19.42 | 1.14 | 1.22 | 4.22 | 1.06 | 0.94 |
| 10803 | -19.53 | 1.14 | 1.22 | 3.92 | 1.07 | 0.94 |
| 10804 | -19.62 | 1.15 | 1.23 | 3.63 | 1.07 | 0.94 |
| 10805 | -19.69 | 1.15 | 1.23 | 3.36 | 1.08 | 0.94 |
| 10806 | -19.76 | 1.16 | 1.23 | 3.10 | 1.08 | 0.94 |
| 10807 | -19.80 | 1.16 | 1.24 | 2.86 | 1.09 | 0.94 |
| 10808 | -19.84 | 1.16 | 1.24 | 2.62 | 1.09 | 0.94 |
| 10809 | -16.17 | 0.93 | 1.00 | 11.79 | 0.95 | 1.02 |
| 10810 | – | – | – | – | – | – |
| 10811 | – | – | – | – | – | – |
| 10812 | -16.18 | 0.94 | 1.01 | 11.62 | 0.96 | 1.02 |
| 10813 | -16.18 | 0.95 | 1.02 | 11.43 | 0.96 | 1.01 |
| 10814 | -16.68 | 1.05 | 1.11 | 8.75 | 1.01 | 0.97 |
| 10815 | -17.95 | 1.14 | 1.21 | 5.13 | 1.07 | 0.94 |
| 10816 | -18.09 | 1.14 | 1.22 | 4.78 | 1.07 | 0.94 |
| 10817 | -18.22 | 1.15 | 1.23 | 4.44 | 1.08 | 0.94 |
| 10818 | -18.34 | 1.16 | 1.23 | 4.11 | 1.08 | 0.94 |
| 10819 | -18.45 | 1.16 | 1.24 | 3.80 | 1.09 | 0.94 |
| 10820 | -18.54 | 1.17 | 1.24 | 3.51 | 1.09 | 0.94 |
| 10821 | -18.62 | 1.17 | 1.25 | 3.23 | 1.10 | 0.94 |
| 10822 | -18.68 | 1.17 | 1.25 | 2.97 | 1.10 | 0.94 |
| 10823 | -18.72 | 1.18 | 1.25 | 2.72 | 1.11 | 0.94 |
| 10824 | -18.74 | 1.18 | 1.25 | 2.48 | 1.11 | 0.94 |
| 10825 | -18.75 | 1.18 | 1.25 | 2.26 | 1.11 | 0.95 |

[Table 696]

EP 4 442 787 A1

| | | | | | | |
|---|---|---|---|---|---|---|
| 10826 | -15.23 | 0.95 | 1.02 | 11.60 | 0.97 | 1.01 |
| 10827 | — | — | — | — | — | — |
| 10828 | — | — | — | — | — | — |
| 10829 | -15.24 | 0.96 | 1.03 | 11.39 | 0.97 | 1.01 |
| 10830 | -15.25 | 0.97 | 1.04 | 11.17 | 0.98 | 1.00 |
| 10831 | -15.83 | 1.07 | 1.13 | 8.21 | 1.03 | 0.96 |
| 10832 | -17.15 | 1.15 | 1.23 | 4.52 | 1.09 | 0.94 |
| 10833 | -17.28 | 1.16 | 1.23 | 4.18 | 1.09 | 0.94 |
| 10834 | -17.40 | 1.17 | 1.24 | 3.85 | 1.10 | 0.94 |
| 10835 | -17.51 | 1.17 | 1.25 | 3.54 | 1.10 | 0.94 |
| 10836 | -17.59 | 1.18 | 1.25 | 3.25 | 1.11 | 0.94 |
| 10837 | -17.66 | 1.18 | 1.26 | 2.97 | 1.12 | 0.94 |
| 10838 | -17.71 | 1.18 | 1.26 | 2.72 | 1.12 | 0.94 |
| 10839 | -17.74 | 1.19 | 1.26 | 2.48 | 1.12 | 0.95 |
| 10840 | -17.75 | 1.19 | 1.27 | 2.25 | 1.13 | 0.95 |
| 10841 | -17.74 | 1.19 | 1.27 | 2.04 | 1.13 | 0.95 |
| 10842 | -17.71 | 1.19 | 1.26 | 1.84 | 1.13 | 0.95 |
| 10843 | -14.89 | 0.96 | 1.03 | 11.45 | 0.97 | 1.01 |
| 10844 | — | — | — | — | — | — |
| 10845 | -14.90 | 0.97 | 1.03 | 11.22 | 0.98 | 1.00 |
| 10846 | -14.92 | 0.98 | 1.04 | 10.99 | 0.98 | 1.00 |
| 10847 | -15.53 | 1.07 | 1.14 | 7.94 | 1.03 | 0.96 |
| 10848 | -16.87 | 1.16 | 1.23 | 4.25 | 1.09 | 0.94 |
| 10849 | -16.99 | 1.16 | 1.24 | 3.91 | 1.10 | 0.94 |
| 10850 | -17.10 | 1.17 | 1.25 | 3.59 | 1.11 | 0.94 |
| 10851 | -17.20 | 1.18 | 1.25 | 3.29 | 1.11 | 0.94 |
| 10852 | -17.27 | 1.18 | 1.26 | 3.01 | 1.12 | 0.94 |
| 10853 | -17.33 | 1.18 | 1.26 | 2.75 | 1.12 | 0.94 |
| 10854 | -17.36 | 1.19 | 1.26 | 2.50 | 1.13 | 0.95 |
| 10855 | -17.38 | 1.19 | 1.27 | 2.28 | 1.13 | 0.95 |
| 10856 | -17.37 | 1.19 | 1.27 | 2.06 | 1.14 | 0.95 |
| 10857 | -17.34 | 1.19 | 1.27 | 1.86 | 1.14 | 0.95 |
| 10858 | -17.30 | 1.19 | 1.27 | 1.67 | 1.14 | 0.95 |
| 10859 | -19.24 | 0.75 | 0.81 | 10.98 | 0.82 | 1.09 |
| 10860 | — | — | — | — | — | — |
| 10861 | -19.12 | 0.76 | 0.82 | 11.13 | 0.82 | 1.09 |
| 10862 | -18.81 | 0.79 | 0.85 | 11.45 | 0.84 | 1.08 |
| 10863 | -18.28 | 0.88 | 0.94 | 11.19 | 0.89 | 1.02 |
| 10864 | -18.57 | 0.97 | 1.03 | 8.95 | 0.94 | 0.97 |
| 10865 | -18.65 | 0.98 | 1.04 | 8.63 | 0.95 | 0.97 |
| 10866 | -18.74 | 0.99 | 1.05 | 8.31 | 0.95 | 0.97 |
| 10867 | -18.84 | 1.00 | 1.05 | 7.97 | 0.96 | 0.96 |
| 10868 | -18.95 | 1.01 | 1.06 | 7.63 | 0.96 | 0.96 |
| 10869 | -19.06 | 1.01 | 1.07 | 7.28 | 0.97 | 0.96 |
| 10870 | -19.19 | 1.02 | 1.08 | 6.92 | 0.97 | 0.96 |
| 10871 | -19.31 | 1.03 | 1.08 | 6.56 | 0.97 | 0.96 |
| 10872 | -19.44 | 1.03 | 1.09 | 6.20 | 0.98 | 0.96 |
| 10873 | -19.57 | 1.04 | 1.09 | 5.84 | 0.98 | 0.95 |
| 10874 | -19.70 | 1.04 | 1.10 | 5.48 | 0.99 | 0.95 |
| 10875 | -18.07 | 0.78 | 0.84 | 11.95 | 0.85 | 1.09 |

[Table 697]

730

| 10876 | — | — | — | — | — | — |
|---|---|---|---|---|---|---|
| 10877 | -17.96 | 0.79 | 0.85 | 12.06 | 0.85 | 1.09 |
| 10878 | -17.70 | 0.81 | 0.88 | 12.27 | 0.87 | 1.07 |
| 10879 | -17.26 | 0.90 | 0.96 | 11.64 | 0.92 | 1.02 |
| 10880 | -17.62 | 1.00 | 1.05 | 9.11 | 0.96 | 0.97 |
| 10881 | -17.71 | 1.01 | 1.06 | 8.78 | 0.97 | 0.97 |
| 10882 | -17.80 | 1.02 | 1.07 | 8.43 | 0.97 | 0.96 |
| 10883 | -17.90 | 1.02 | 1.08 | 8.08 | 0.98 | 0.96 |
| 10884 | -18.02 | 1.03 | 1.09 | 7.72 | 0.98 | 0.96 |
| 10885 | -18.14 | 1.04 | 1.10 | 7.35 | 0.99 | 0.96 |
| 10886 | -18.26 | 1.05 | 1.10 | 6.98 | 0.99 | 0.96 |
| 10887 | -18.39 | 1.05 | 1.11 | 6.61 | 1.00 | 0.95 |
| 10888 | -18.52 | 1.06 | 1.11 | 6.24 | 1.00 | 0.95 |
| 10889 | -18.65 | 1.06 | 1.12 | 5.87 | 1.01 | 0.95 |
| 10890 | -18.77 | 1.07 | 1.12 | 5.50 | 1.01 | 0.95 |
| 10891 | -16.54 | 0.81 | 0.87 | 13.01 | 0.88 | 1.09 |
| 10892 | — | — | — | — | — | — |
| 10893 | — | — | — | — | — | — |
| 10894 | -16.45 | 0.81 | 0.88 | 13.08 | 0.88 | 1.09 |
| 10895 | -16.14 | 0.85 | 0.91 | 13.14 | 0.90 | 1.07 |
| 10896 | -15.83 | 0.94 | 1.00 | 11.94 | 0.95 | 1.01 |
| 10897 | -16.28 | 1.03 | 1.09 | 9.00 | 0.99 | 0.96 |
| 10898 | -16.37 | 1.04 | 1.10 | 8.63 | 1.00 | 0.96 |
| 10899 | -16.48 | 1.05 | 1.10 | 8.26 | 1.00 | 0.96 |
| 10900 | -16.59 | 1.06 | 1.11 | 7.88 | 1.01 | 0.96 |
| 10901 | -16.71 | 1.06 | 1.12 | 7.50 | 1.02 | 0.95 |
| 10902 | -16.83 | 1.07 | 1.13 | 7.11 | 1.02 | 0.95 |
| 10903 | -16.96 | 1.08 | 1.14 | 6.73 | 1.03 | 0.95 |
| 10904 | -17.09 | 1.08 | 1.14 | 6.34 | 1.03 | 0.95 |
| 10905 | -17.22 | 1.09 | 1.15 | 5.96 | 1.04 | 0.95 |
| 10906 | -17.34 | 1.09 | 1.15 | 5.58 | 1.04 | 0.95 |
| 10907 | -17.46 | 1.10 | 1.16 | 5.20 | 1.04 | 0.95 |
| 10908 | -15.21 | 0.83 | 0.90 | 13.65 | 0.90 | 1.08 |
| 10909 | — | — | — | — | — | — |
| 10910 | — | — | — | — | — | — |
| 10911 | -15.14 | 0.84 | 0.91 | 13.66 | 0.90 | 1.07 |
| 10912 | -14.88 | 0.88 | 0.94 | 13.48 | 0.92 | 1.05 |
| 10913 | -14.65 | 0.97 | 1.02 | 11.76 | 0.97 | 1.00 |
| 10914 | -15.18 | 1.06 | 1.11 | 8.49 | 1.02 | 0.96 |
| 10915 | -15.28 | 1.07 | 1.12 | 8.11 | 1.02 | 0.95 |
| 10916 | -15.39 | 1.08 | 1.13 | 7.72 | 1.03 | 0.95 |
| 10917 | -15.51 | 1.08 | 1.14 | 7.32 | 1.03 | 0.95 |
| 10918 | -15.64 | 1.09 | 1.14 | 6.93 | 1.04 | 0.95 |
| 10919 | -15.76 | 1.10 | 1.15 | 6.53 | 1.05 | 0.95 |
| 10920 | -15.89 | 1.10 | 1.16 | 6.14 | 1.05 | 0.95 |
| 10921 | -16.02 | 1.11 | 1.16 | 5.75 | 1.06 | 0.95 |
| 10922 | -16.14 | 1.11 | 1.17 | 5.37 | 1.06 | 0.95 |
| 10923 | -16.26 | 1.12 | 1.17 | 4.99 | 1.07 | 0.95 |
| 10924 | -16.36 | 1.12 | 1.18 | 4.62 | 1.07 | 0.95 |
| 10925 | -14.12 | 0.86 | 0.92 | 13.82 | 0.91 | 1.06 |

[Table 698]

| | | | | | |
|---|---|---|---|---|---|
| 10926 | — | — | — | — | — | — |
| 10927 | — | — | — | — | — | — |
| 10928 | -14.05 | 0.86 | 0.92 | 13.77 | 0.92 | 1.06 |
| 10929 | -13.82 | 0.90 | 0.96 | 13.37 | 0.93 | 1.04 |
| 10930 | -13.66 | 0.99 | 1.04 | 11.23 | 0.98 | 0.99 |
| 10931 | -14.28 | 1.08 | 1.13 | 7.72 | 1.04 | 0.95 |
| 10932 | -14.39 | 1.09 | 1.14 | 7.32 | 1.04 | 0.95 |
| 10933 | -14.51 | 1.09 | 1.15 | 6.92 | 1.05 | 0.95 |
| 10934 | -14.63 | 1.10 | 1.15 | 6.52 | 1.05 | 0.95 |
| 10935 | -14.76 | 1.11 | 1.16 | 6.12 | 1.06 | 0.95 |
| 10936 | -14.88 | 1.11 | 1.17 | 5.73 | 1.07 | 0.95 |
| 10937 | -15.01 | 1.12 | 1.17 | 5.34 | 1.07 | 0.95 |
| 10938 | -15.12 | 1.12 | 1.18 | 4.96 | 1.08 | 0.95 |
| 10939 | -15.23 | 1.13 | 1.18 | 4.59 | 1.08 | 0.95 |
| 10940 | -15.33 | 1.13 | 1.19 | 4.22 | 1.09 | 0.95 |
| 10941 | -15.41 | 1.13 | 1.19 | 3.87 | 1.09 | 0.95 |
| 10942 | -13.73 | 0.86 | 0.92 | 13.77 | 0.92 | 1.06 |
| 10943 | — | — | — | — | — | — |
| 10944 | — | — | — | — | — | — |
| 10945 | -13.66 | 0.87 | 0.93 | 13.70 | 0.92 | 1.05 |
| 10946 | -13.45 | 0.91 | 0.96 | 13.23 | 0.94 | 1.03 |
| 10947 | -13.30 | 0.99 | 1.05 | 10.93 | 0.99 | 0.98 |
| 10948 | -13.96 | 1.08 | 1.14 | 7.35 | 1.04 | 0.95 |
| 10949 | -14.08 | 1.09 | 1.14 | 6.95 | 1.05 | 0.95 |
| 10950 | -14.20 | 1.10 | 1.15 | 6.55 | 1.06 | 0.95 |
| 10951 | -14.32 | 1.11 | 1.16 | 6.16 | 1.06 | 0.95 |
| 10952 | -14.45 | 1.11 | 1.17 | 5.76 | 1.07 | 0.95 |
| 10953 | -14.57 | 1.12 | 1.17 | 5.37 | 1.07 | 0.95 |
| 10954 | -14.69 | 1.12 | 1.18 | 4.99 | 1.08 | 0.95 |
| 10955 | -14.80 | 1.13 | 1.18 | 4.61 | 1.09 | 0.95 |
| 10956 | -14.90 | 1.13 | 1.19 | 4.25 | 1.09 | 0.95 |
| 10957 | -14.99 | 1.13 | 1.19 | 3.89 | 1.10 | 0.96 |
| 10958 | -15.06 | 1.14 | 1.19 | 3.55 | 1.10 | 0.96 |
| 10959 | -20.18 | 0.64 | 0.69 | 8.89 | 0.73 | 1.13 |
| 10960 | — | — | — | — | — | — |
| 10961 | — | — | — | — | — | — |
| 10962 | -19.68 | 0.66 | 0.71 | 9.69 | 0.74 | 1.13 |
| 10963 | -18.61 | 0.70 | 0.76 | 11.36 | 0.78 | 1.12 |
| 10964 | -17.12 | 0.79 | 0.84 | 13.07 | 0.84 | 1.07 |
| 10965 | -16.44 | 0.88 | 0.92 | 12.34 | 0.89 | 1.01 |
| 10966 | -16.41 | 0.89 | 0.93 | 12.13 | 0.89 | 1.01 |
| 10967 | -16.40 | 0.90 | 0.94 | 11.91 | 0.90 | 1.00 |
| 10968 | -16.40 | 0.91 | 0.95 | 11.66 | 0.90 | 1.00 |
| 10969 | -16.41 | 0.91 | 0.96 | 11.39 | 0.90 | 0.99 |
| 10970 | -16.43 | 0.92 | 0.96 | 11.10 | 0.91 | 0.99 |
| 10971 | -16.47 | 0.93 | 0.97 | 10.79 | 0.91 | 0.98 |
| 10972 | -16.51 | 0.94 | 0.98 | 10.45 | 0.92 | 0.98 |
| 10973 | -16.57 | 0.94 | 0.98 | 10.10 | 0.92 | 0.98 |
| 10974 | -16.65 | 0.95 | 0.99 | 9.73 | 0.92 | 0.97 |
| 10975 | -16.74 | 0.96 | 0.99 | 9.34 | 0.93 | 0.97 |

[Table 699]

| 10976 | -18.62 | 0.67 | 0.73 | 10.49 | 0.77 | 1.14 |
|---|---|---|---|---|---|---|
| 10977 | – | – | – | – | – | – |
| 10978 | – | – | – | – | – | – |
| 10979 | -18.39 | 0.68 | 0.74 | 10.85 | 0.77 | 1.14 |
| 10980 | -17.22 | 0.73 | 0.79 | 12.63 | 0.81 | 1.12 |
| 10981 | -15.89 | 0.82 | 0.87 | 13.83 | 0.87 | 1.07 |
| 10982 | -15.29 | 0.91 | 0.95 | 12.68 | 0.91 | 1.01 |
| 10983 | -15.28 | 0.92 | 0.96 | 12.45 | 0.92 | 1.00 |
| 10984 | -15.27 | 0.92 | 0.97 | 12.19 | 0.92 | 1.00 |
| 10985 | -15.27 | 0.93 | 0.97 | 11.91 | 0.93 | 0.99 |
| 10986 | -15.29 | 0.94 | 0.98 | 11.61 | 0.93 | 0.99 |
| 10987 | -15.31 | 0.95 | 0.99 | 11.29 | 0.93 | 0.98 |
| 10988 | -15.35 | 0.96 | 1.00 | 10.95 | 0.94 | 0.98 |
| 10989 | -15.40 | 0.96 | 1.00 | 10.59 | 0.94 | 0.97 |
| 10990 | -15.46 | 0.97 | 1.01 | 10.22 | 0.95 | 0.97 |
| 10991 | -15.54 | 0.98 | 1.01 | 9.83 | 0.95 | 0.97 |
| 10992 | -15.63 | 0.98 | 1.02 | 9.42 | 0.95 | 0.97 |
| 10993 | -16.52 | 0.71 | 0.77 | 12.54 | 0.81 | 1.14 |
| 10994 | – | – | – | – | – | – |
| 10995 | – | – | – | – | – | – |
| 10996 | -16.33 | 0.72 | 0.78 | 12.82 | 0.82 | 1.14 |
| 10997 | -15.34 | 0.77 | 0.83 | 14.10 | 0.85 | 1.11 |
| 10998 | -14.20 | 0.85 | 0.91 | 14.51 | 0.90 | 1.05 |
| 10999 | -13.70 | 0.94 | 0.99 | 12.72 | 0.94 | 1.00 |
| 11000 | -13.69 | 0.95 | 0.99 | 12.43 | 0.95 | 0.99 |
| 11001 | -13.69 | 0.96 | 1.00 | 12.12 | 0.95 | 0.99 |
| 11002 | -13.70 | 0.97 | 1.01 | 11.80 | 0.96 | 0.98 |
| 11003 | -13.72 | 0.98 | 1.02 | 11.45 | 0.96 | 0.98 |
| 11004 | -13.75 | 0.99 | 1.02 | 11.09 | 0.97 | 0.97 |
| 11005 | -13.79 | 0.99 | 1.03 | 10.72 | 0.97 | 0.97 |
| 11006 | -13.85 | 1.00 | 1.04 | 10.33 | 0.97 | 0.97 |
| 11007 | -13.92 | 1.01 | 1.04 | 9.92 | 0.98 | 0.97 |
| 11008 | -13.99 | 1.01 | 1.05 | 9.50 | 0.98 | 0.96 |
| 11009 | -14.09 | 1.02 | 1.05 | 9.07 | 0.99 | 0.96 |
| 11010 | -22.58 | 1.11 | 1.21 | 4.68 | 1.04 | 0.95 |
| 11011 | – | – | – | – | – | – |
| 11012 | – | – | – | – | – | – |
| 11013 | -22.73 | 1.12 | 1.22 | 4.37 | 1.04 | 0.95 |
| 11014 | -23.47 | 1.17 | 1.28 | 2.88 | 1.07 | 0.94 |
| 11015 | -24.14 | 1.24 | 1.36 | 1.00 | 1.12 | 0.92 |
| 11016 | -24.11 | 1.24 | 1.36 | 0.93 | 1.12 | 0.92 |
| 11017 | -24.07 | 1.25 | 1.37 | 0.87 | 1.12 | 0.92 |
| 11018 | -24.02 | 1.25 | 1.37 | 0.82 | 1.13 | 0.92 |
| 11019 | -23.96 | 1.25 | 1.37 | 0.79 | 1.13 | 0.92 |
| 11020 | -23.88 | 1.26 | 1.37 | 0.77 | 1.13 | 0.92 |
| 11021 | -23.81 | 1.26 | 1.37 | 0.76 | 1.14 | 0.93 |
| 11022 | -23.71 | 1.26 | 1.37 | 0.75 | 1.14 | 0.93 |
| 11023 | -23.61 | 1.26 | 1.37 | 0.74 | 1.14 | 0.93 |
| 11024 | -23.52 | 1.26 | 1.36 | 0.73 | 1.14 | 0.93 |
| 11025 | -23.43 | 1.25 | 1.36 | 0.70 | 1.14 | 0.93 |

[Table 700]

733

| 11026 | -21.57 | 1.15 | 1.26 | 5.41 | 1.08 | 0.96 |
| 11027 | — | — | — | — | — | — |
| 11028 | — | — | — | — | — | — |
| 11029 | -21.72 | 1.16 | 1.27 | 5.09 | 1.08 | 0.95 |
| 11030 | -22.48 | 1.21 | 1.33 | 3.55 | 1.11 | 0.94 |
| 11031 | -23.19 | 1.28 | 1.41 | 1.60 | 1.16 | 0.93 |
| 11032 | -23.17 | 1.29 | 1.42 | 1.52 | 1.16 | 0.93 |
| 11033 | -23.12 | 1.29 | 1.42 | 1.45 | 1.17 | 0.93 |
| 11034 | -23.07 | 1.30 | 1.43 | 1.41 | 1.17 | 0.93 |
| 11035 | -23.00 | 1.30 | 1.43 | 1.38 | 1.18 | 0.93 |
| 11036 | -22.93 | 1.30 | 1.43 | 1.36 | 1.18 | 0.93 |
| 11037 | -22.84 | 1.30 | 1.43 | 1.35 | 1.18 | 0.93 |
| 11038 | -22.75 | 1.30 | 1.43 | **1.34** | 1.19 | 0.93 |
| 11039 | -22.65 | 1.30 | 1.43 | 1.33 | 1.19 | 0.93 |
| 11040 | -22.55 | 1.30 | 1.42 | 1.32 | 1.19 | 0.93 |
| 11041 | -84.89 | 0.00 | 0.00 | -0.09 | 0.00 | 0.00 |
| 11042 | -20.41 | 1.18 | 1.29 | 6.48 | 1.11 | 0.96 |
| 11043 | — | — | — | — | — | — |
| 11044 | — | — | — | — | — | — |
| 11045 | -20.57 | 1.19 | 1.31 | 6.15 | 1.12 | 0.96 |
| 11046 | -21.51 | 1.25 | 1.38 | 4.23 | 1.15 | 0.94 |
| 11047 | -22.26 | 1.33 | 1.47 | 2.18 | 1.20 | 0.93 |
| 11048 | -22.24 | 1.33 | 1.47 | 2.09 | 1.21 | 0.93 |
| 11049 | -22.20 | 1.34 | 1.48 | 2.02 | 1.21 | 0.93 |
| 11050 | -22.15 | 1.34 | 1.48 | 1.97 | 1.22 | 0.93 |
| 11051 | -22.09 | 1.35 | 1.49 | 1.93 | 1.22 | 0.93 |
| 11052 | -22.00 | 1.35 | 1.49 | 1.91 | 1.22 | 0.93 |
| 11053 | -21.91 | 1.35 | 1.49 | 1.89 | 1.23 | 0.93 |
| 11054 | -21.82 | 1.35 | 1.49 | 1.88 | 1.23 | 0.93 |
| 11055 | -21.70 | 1.35 | 1.48 | 1.87 | 1.23 | 0.93 |
| 11056 | -21.61 | 1.35 | 1.48 | 1.86 | 1.24 | 0.93 |
| 11057 | -21.51 | 1.35 | 1.48 | 1.84 | 1.24 | 0.93 |
| 11058 | -19.26 | 1.20 | 1.33 | 7.57 | 1.15 | 0.97 |
| 11059 | — | — | — | — | — | — |
| 11060 | -19.41 | 1.21 | 1.34 | 7.24 | 1.15 | 0.97 |
| 11061 | -20.54 | 1.29 | 1.43 | 4.91 | 1.19 | 0.94 |
| 11062 | -21.36 | 1.37 | 1.53 | 2.73 | 1.25 | 0.93 |
| 11063 | -21.34 | 1.38 | 1.53 | 2.64 | 1.25 | 0.93 |
| 11064 | -21.31 | 1.38 | 1.54 | 2.56 | 1.26 | 0.93 |
| 11065 | -21.26 | 1.39 | 1.54 | 2.50 | 1.26 | 0.93 |
| 11066 | -21.19 | 1.39 | 1.54 | 2.46 | 1.26 | 0.93 |
| 11067 | -21.11 | 1.40 | 1.54 | 2.42 | 1.27 | 0.93 |
| 11068 | -21.03 | 1.40 | 1.54 | 2.40 | 1.27 | 0.93 |
| 11069 | -20.92 | 1.40 | 1.54 | 2.39 | 1.27 | 0.93 |
| 11070 | -20.82 | 1.40 | 1.54 | 2.38 | 1.28 | 0.93 |
| 11071 | -20.71 | 1.40 | 1.54 | 2.36 | 1.28 | 0.93 |
| 11072 | -84.89 | 0.00 | 0.00 | -0.09 | 0.00 | 0.00 |
| 11073 | -18.26 | 1.24 | 1.38 | 8.34 | 1.19 | 0.97 |
| 11074 | — | — | — | — | — | — |
| 11075 | — | — | — | — | — | — |

[Table 701]

| | | | | | | |
|---|---|---|---|---|---|---|
| 11076 | -18.41 | 1.25 | 1.39 | 7.99 | 1.19 | 0.97 |
| 11077 | -19.59 | 1.33 | 1.48 | 5.57 | 1.23 | 0.95 |
| 11078 | -20.49 | 1.42 | 1.58 | 3.26 | 1.29 | 0.93 |
| 11079 | -20.47 | 1.42 | 1.59 | 3.15 | 1.29 | 0.92 |
| 11080 | -20.44 | 1.43 | 1.59 | 3.06 | 1.30 | 0.92 |
| 11081 | -20.39 | 1.44 | 1.60 | 2.99 | 1.30 | 0.92 |
| 11082 | -20.33 | 1.44 | 1.60 | 2.94 | 1.30 | 0.92 |
| 11083 | -20.25 | 1.44 | 1.60 | 2.90 | 1.31 | 0.92 |
| 11084 | -20.17 | 1.45 | 1.60 | 2.87 | 1.31 | 0.92 |
| 11085 | -20.07 | 1.45 | 1.60 | 2.85 | 1.32 | 0.93 |
| 11086 | -19.96 | 1.45 | 1.60 | 2.84 | 1.32 | 0.93 |
| 11087 | -19.85 | 1.45 | 1.60 | 2.82 | 1.32 | 0.93 |
| 11088 | -19.73 | 1.44 | 1.59 | 2.81 | 1.32 | 0.93 |
| 11089 | -21.66 | 1.07 | 1.16 | 6.18 | 1.01 | 0.97 |
| 11090 | — | — | — | — | — | — |
| 11091 | — | — | — | — | — | — |
| 11092 | -21.79 | 1.08 | 1.17 | 5.88 | 1.02 | 0.96 |
| 11093 | -22.65 | 1.14 | 1.24 | 4.03 | 1.05 | 0.94 |
| 11094 | -23.64 | 1.21 | 1.33 | 1.68 | 1.10 | 0.93 |
| 11095 | -23.65 | 1.22 | 1.33 | 1.55 | 1.11 | 0.93 |
| 11096 | -23.65 | 1.22 | 1.34 | 1.44 | 1.11 | 0.93 |
| 11097 | -23.63 | 1.23 | 1.34 | 1.35 | 1.11 | 0.93 |
| 11098 | -23.60 | 1.23 | 1.35 | 1.27 | 1.12 | 0.93 |
| 11099 | -23.55 | 1.23 | 1.35 | 1.21 | 1.12 | 0.93 |
| 11100 | -23.50 | 1.24 | 1.35 | 1.16 | 1.13 | 0.93 |
| 11101 | -23.43 | 1.24 | 1.35 | 1.12 | 1.13 | 0.93 |
| 11102 | -23.36 | 1.24 | 1.35 | 1.08 | 1.13 | 0.93 |
| 11103 | -23.28 | 1.24 | 1.34 | 1.04 | 1.13 | 0.93 |
| 11104 | -23.20 | 1.24 | 1.34 | 0.99 | 1.13 | 0.93 |
| 11105 | -20.45 | 1.09 | 1.20 | 7.30 | 1.05 | 0.98 |
| 11106 | — | — | — | — | — | — |
| 11107 | — | — | — | — | — | — |
| 11108 | -20.58 | 1.10 | 1.21 | 7.00 | 1.06 | 0.97 |
| 11109 | -21.59 | 1.18 | 1.29 | 4.79 | 1.09 | 0.95 |
| 11110 | -22.62 | 1.26 | 1.38 | 2.35 | 1.15 | 0.93 |
| 11111 | -22.63 | 1.26 | 1.39 | 2.21 | 1.15 | 0.93 |
| 11112 | -22.63 | 1.27 | 1.40 | 2.10 | 1.16 | 0.93 |
| 11113 | -22.61 | 1.27 | 1.40 | 2.00 | 1.16 | 0.93 |
| 11114 | -22.58 | 1.28 | 1.40 | 1.92 | 1.17 | 0.93 |
| 11115 | -22.53 | 1.28 | 1.41 | 1.86 | 1.17 | 0.93 |
| 11116 | -22.47 | 1.28 | 1.41 | 1.81 | 1.17 | 0.93 |
| 11117 | -22.40 | 1.29 | 1.41 | 1.76 | 1.18 | 0.93 |
| 11118 | -22.33 | 1.29 | 1.41 | 1.72 | 1.18 | 0.93 |
| 11119 | -22.25 | 1.29 | 1.40 | 1.68 | 1.18 | 0.93 |
| 11120 | -22.17 | 1.28 | 1.40 | 1.63 | 1.18 | 0.94 |
| 11121 | -19.36 | 1.13 | 1.24 | 8.16 | 1.09 | 0.98 |
| 11122 | — | — | — | — | — | — |
| 11123 | — | — | — | — | — | — |
| 11124 | -19.49 | 1.14 | 1.25 | 7.85 | 1.10 | 0.98 |
| 11125 | -20.54 | 1.22 | 1.34 | 5.55 | 1.14 | 0.95 |

[Table 702]

735

| 11126 | -21.62 | 1.30 | 1.44 | 3.00 | 1.19 | 0.93 |
|---|---|---|---|---|---|---|
| 11127 | -21.64 | 1.31 | 1.45 | 2.86 | 1.20 | 0.93 |
| 11128 | -21.64 | 1.32 | 1.45 | 2.73 | 1.20 | 0.93 |
| 11129 | -21.62 | 1.32 | 1.46 | 2.63 | 1.21 | 0.93 |
| 11130 | -21.59 | 1.33 | 1.46 | 2.55 | 1.21 | 0.93 |
| 11131 | -21.54 | 1.33 | 1.47 | 2.48 | 1.22 | 0.93 |
| 11132 | -21.48 | 1.33 | 1.47 | 2.42 | 1.22 | 0.93 |
| 11133 | -21.41 | 1.33 | 1.47 | 2.37 | 1.22 | 0.93 |
| 11134 | -21.34 | 1.34 | 1.47 | 2.32 | 1.23 | 0.93 |
| 11135 | -21.26 | 1.34 | 1.46 | 2.28 | 1.23 | 0.94 |
| 11136 | -21.17 | 1.33 | 1.46 | 2.23 | 1.23 | 0.94 |
| 11137 | -18.15 | 1.16 | 1.28 | 9.34 | 1.13 | 0.99 |
| 11138 | — | — | — | — | — | — |
| 11139 | — | — | — | — | — | — |
| 11140 | -18.28 | 1.17 | 1.29 | 9.02 | 1.14 | 0.99 |
| 11141 | -19.50 | 1.26 | 1.39 | 6.31 | 1.18 | 0.95 |
| 11142 | -20.64 | 1.35 | 1.50 | 3.63 | 1.24 | 0.93 |
| 11143 | -20.67 | 1.36 | 1.51 | 3.47 | 1.24 | 0.93 |
| 11144 | -20.68 | 1.36 | 1.51 | 3.34 | 1.25 | 0.93 |
| 11145 | -20.67 | 1.37 | 1.52 | 3.22 | 1.25 | 0.93 |
| 11146 | -20.64 | 1.37 | 1.52 | 3.13 | 1.26 | 0.93 |
| 11147 | -20.59 | 1.38 | 1.52 | 3.05 | 1.26 | 0.93 |
| 11148 | -20.54 | 1.38 | 1.53 | 2.98 | 1.26 | 0.93 |
| 11149 | -20.47 | 1.38 | 1.53 | 2.93 | 1.27 | 0.93 |
| 11150 | -20.39 | 1.38 | 1.53 | 2.88 | 1.27 | 0.93 |
| 11151 | -20.30 | 1.38 | 1.52 | 2.83 | 1.27 | 0.93 |
| 11152 | -20.21 | 1.38 | 1.52 | 2.78 | 1.28 | 0.94 |
| 11153 | -17.08 | 1.20 | 1.33 | 10.21 | 1.17 | 0.99 |
| 11154 | — | — | — | — | — | — |
| 11155 | -17.21 | 1.21 | 1.34 | 9.88 | 1.18 | 0.99 |
| 11156 | -18.48 | 1.30 | 1.44 | 7.05 | 1.22 | 0.96 |
| 11157 | -19.70 | 1.40 | 1.55 | 4.22 | 1.28 | 0.93 |
| 11158 | -19.73 | 1.41 | 1.56 | 4.05 | 1.28 | 0.93 |
| 11159 | -19.75 | 1.41 | 1.57 | 3.90 | 1.29 | 0.93 |
| 11160 | -19.74 | 1.42 | 1.57 | 3.77 | 1.29 | 0.93 |
| 11161 | -19.72 | 1.42 | 1.58 | 3.66 | 1.30 | 0.93 |
| 11162 | -19.68 | 1.43 | 1.58 | 3.57 | 1.30 | 0.93 |
| 11163 | -19.63 | 1.43 | 1.59 | 3.50 | 1.31 | 0.93 |
| 11164 | -19.56 | 1.43 | 1.59 | 3.44 | 1.31 | 0.93 |
| 11165 | -19.47 | 1.43 | 1.59 | 3.38 | 1.31 | 0.93 |
| 11166 | -19.39 | 1.43 | 1.58 | 3.33 | 1.32 | 0.93 |
| 11167 | -19.29 | 1.43 | 1.58 | 3.28 | 1.32 | 0.93 |
| 11168 | -19.99 | 0.96 | 1.05 | 9.21 | 0.96 | 1.01 |
| 11169 | — | — | — | — | — | — |
| 11170 | — | — | — | — | — | — |
| 11171 | -20.04 | 0.97 | 1.06 | 9.02 | 0.97 | 1.01 |
| 11172 | -20.87 | 1.06 | 1.15 | 6.64 | 1.01 | 0.97 |
| 11173 | -22.18 | 1.15 | 1.25 | 3.62 | 1.07 | 0.94 |
| 11174 | -22.28 | 1.16 | 1.26 | 3.37 | 1.07 | 0.94 |
| 11175 | -22.36 | 1.17 | 1.27 | 3.15 | 1.08 | 0.94 |

[Table 703]

736

| | | | | | |
|---|---|---|---|---|---|
| 11176 | -22.42 | 1.17 | 1.28 | 2.94 | 1.08 | 0.94 |
| 11177 | -22.47 | 1.18 | 1.28 | 2.75 | 1.09 | 0.94 |
| 11178 | -22.50 | 1.18 | 1.29 | 2.58 | 1.09 | 0.94 |
| 11179 | -22.52 | 1.19 | 1.29 | 2.43 | 1.10 | 0.94 |
| 11180 | -22.52 | 1.19 | 1.29 | 2.29 | 1.10 | 0.94 |
| 11181 | -22.51 | 1.19 | 1.29 | 2.16 | 1.10 | 0.94 |
| 11182 | -22.49 | 1.19 | 1.29 | 2.03 | 1.10 | 0.94 |
| 11183 | -22.47 | 1.19 | 1.29 | 1.91 | 1.11 | 0.94 |
| 11184 | -18.72 | 1.00 | 1.09 | 10.27 | 1.01 | 1.02 |
| 11185 | – | – | – | – | – | – |
| 11186 | – | – | – | – | – | – |
| 11187 | -18.78 | 1.01 | 1.10 | 10.06 | 1.01 | 1.02 |
| 11188 | -19.65 | 1.11 | 1.20 | 7.57 | 1.06 | 0.97 |
| 11189 | -20.99 | 1.20 | 1.31 | 4.46 | 1.12 | 0.95 |
| 11190 | -21.09 | 1.21 | 1.32 | 4.20 | 1.12 | 0.95 |
| 11191 | -21.17 | 1.22 | 1.33 | 3.97 | 1.13 | 0.94 |
| 11192 | -21.24 | 1.22 | 1.34 | 3.76 | 1.13 | 0.94 |
| 11193 | -21.29 | 1.23 | 1.34 | 3.56 | 1.14 | 0.94 |
| 11194 | -21.32 | 1.23 | 1.35 | 3.38 | 1.14 | 0.94 |
| 11195 | -21.34 | 1.24 | 1.35 | 3.22 | 1.15 | 0.94 |
| 11196 | -21.34 | 1.24 | 1.35 | 3.08 | 1.15 | 0.94 |
| 11197 | -21.34 | 1.24 | 1.36 | 2.94 | 1.15 | 0.94 |
| 11198 | -21.32 | 1.25 | 1.36 | 2.81 | 1.16 | 0.94 |
| 11199 | -21.29 | 1.25 | 1.36 | 2.68 | 1.16 | 0.94 |
| 11200 | -17.40 | 1.03 | 1.13 | 11.60 | 1.05 | 1.03 |
| 11201 | – | – | – | – | – | – |
| 11202 | – | – | – | – | – | – |
| 11203 | -17.46 | 1.04 | 1.14 | 11.38 | 1.06 | 1.03 |
| 11204 | -18.43 | 1.15 | 1.26 | 8.54 | 1.11 | 0.98 |
| 11205 | -19.82 | 1.25 | 1.37 | 5.30 | 1.17 | 0.95 |
| 11206 | -19.92 | 1.26 | 1.38 | 5.03 | 1.17 | 0.95 |
| 11207 | -20.01 | 1.27 | 1.39 | 4.79 | 1.18 | 0.95 |
| 11208 | -20.08 | 1.27 | 1.40 | 4.56 | 1.18 | 0.94 |
| 11209 | -20.13 | 1.28 | 1.40 | 4.35 | 1.19 | 0.94 |
| 11210 | -20.17 | 1.28 | 1.41 | 4.16 | 1.19 | 0.94 |
| 11211 | -20.19 | 1.29 | 1.41 | 3.99 | 1.20 | 0.94 |
| 11212 | -20.20 | 1.29 | 1.42 | 3.84 | 1.20 | 0.94 |
| 11213 | -20.20 | 1.30 | 1.42 | 3.69 | 1.20 | 0.94 |
| 11214 | -20.18 | 1.30 | 1.42 | 3.55 | 1.21 | 0.94 |
| 11215 | -20.16 | 1.30 | 1.42 | 3.42 | 1.21 | 0.95 |
| 11216 | -16.09 | 1.06 | 1.17 | 12.96 | 1.10 | 1.05 |
| 11217 | – | – | – | – | – | – |
| 11218 | -16.14 | 1.07 | 1.18 | 12.74 | 1.10 | 1.04 |
| 11219 | -16.21 | 1.08 | 1.20 | 12.51 | 1.10 | 1.04 |
| 11220 | -17.22 | 1.19 | 1.31 | 9.50 | 1.15 | 0.98 |
| 11221 | -18.67 | 1.30 | 1.43 | 6.11 | 1.21 | 0.95 |
| 11222 | -18.78 | 1.31 | 1.44 | 5.83 | 1.22 | 0.95 |
| 11223 | -18.88 | 1.31 | 1.45 | 5.57 | 1.22 | 0.95 |
| 11224 | -18.95 | 1.32 | 1.46 | 5.32 | 1.23 | 0.94 |
| 11225 | -19.02 | 1.33 | 1.46 | 5.10 | 1.23 | 0.94 |

[Table 704]

| 11226 | -19.06 | 1.33 | 1.47 | 4.90 | 1.24 | 0.94 |
|---|---|---|---|---|---|---|
| 11227 | -19.09 | 1.34 | 1.48 | 4.71 | 1.24 | 0.94 |
| 11228 | -19.10 | 1.34 | 1.48 | 4.54 | 1.25 | 0.94 |
| 11229 | -19.10 | 1.35 | 1.48 | 4.39 | 1.25 | 0.94 |
| 11230 | -19.09 | 1.35 | 1.48 | 4.24 | 1.25 | 0.94 |
| 11231 | -19.06 | 1.35 | 1.48 | 4.10 | 1.26 | 0.94 |
| 11232 | -14.84 | 1.10 | 1.22 | 14.12 | 1.14 | 1.05 |
| 11233 | − | − | − | − | − | − |
| 11234 | − | − | − | − | − | − |
| 11235 | -14.90 | 1.11 | 1.23 | 13.88 | 1.15 | 1.05 |
| 11236 | -14.97 | 1.12 | 1.25 | 13.63 | 1.15 | 1.04 |
| 11237 | -16.04 | 1.24 | 1.37 | 10.44 | 1.20 | 0.98 |
| 11238 | -17.55 | 1.35 | 1.49 | 6.55 | 1.26 | 0.95 |
| 11239 | -17.68 | 1.36 | 1.50 | 6.57 | 1.26 | 0.95 |
| 11240 | -17.78 | 1.36 | 1.51 | 6.29 | 1.27 | 0.94 |
| 11241 | -17.87 | 1.37 | 1.52 | 6.03 | 1.27 | 0.94 |
| 11242 | -17.94 | 1.38 | 1.53 | 5.79 | 1.28 | 0.94 |
| 11243 | -17.99 | 1.39 | 1.53 | 5.57 | 1.28 | 0.94 |
| 11244 | -18.03 | 1.39 | 1.54 | 5.37 | 1.29 | 0.94 |
| 11245 | -18.05 | 1.40 | 1.54 | 5.19 | 1.29 | 0.94 |
| 11246 | -18.05 | 1.40 | 1.54 | 5.02 | 1.30 | 0.94 |
| 11247 | -18.03 | 1.40 | 1.54 | 4.87 | 1.30 | 0.94 |
| 11248 | -18.00 | 1.40 | 1.54 | 4.72 | 1.30 | 0.94 |
| 11249 | -18.90 | 0.87 | 0.94 | 11.20 | 0.91 | 1.06 |
| 11250 | − | − | − | − | − | − |
| 11251 | − | − | − | − | − | − |
| 11252 | -18.87 | 0.88 | 0.95 | 11.15 | 0.92 | 1.05 |
| 11253 | -18.86 | 0.89 | 0.96 | 11.08 | 0.92 | 1.05 |
| 11254 | -19.09 | 0.99 | 1.06 | 9.43 | 0.97 | 1.00 |
| 11255 | -20.12 | 1.08 | 1.16 | 6.41 | 1.02 | 0.96 |
| 11256 | -20.25 | 1.09 | 1.17 | 6.09 | 1.03 | 0.96 |
| 11257 | -20.38 | 1.10 | 1.18 | 5.77 | 1.03 | 0.95 |
| 11258 | -20.50 | 1.11 | 1.19 | 5.46 | 1.04 | 0.95 |
| 11259 | -20.62 | 1.11 | 1.20 | 5.16 | 1.05 | 0.95 |
| 11260 | -20.73 | 1.12 | 1.21 | 4.87 | 1.05 | 0.95 |
| 11261 | -20.83 | 1.13 | 1.21 | 4.59 | 1.06 | 0.95 |
| 11262 | -20.92 | 1.13 | 1.22 | 4.32 | 1.06 | 0.95 |
| 11263 | -21.00 | 1.14 | 1.22 | 4.07 | 1.06 | 0.95 |
| 11264 | -21.06 | 1.14 | 1.23 | 3.82 | 1.07 | 0.95 |
| 11265 | -21.13 | 1.14 | 1.23 | 3.58 | 1.07 | 0.95 |
| 11266 | -17.44 | 0.90 | 0.99 | 12.62 | 0.96 | 1.08 |
| 11267 | − | − | − | − | − | − |
| 11268 | − | − | − | − | − | − |
| 11269 | -17.42 | 0.91 | 1.00 | 12.57 | 0.96 | 1.07 |
| 11270 | -17.39 | 0.93 | 1.01 | 12.41 | 0.97 | 1.06 |
| 11271 | -17.69 | 1.03 | 1.12 | 10.57 | 1.02 | 1.01 |
| 11272 | -18.74 | 1.13 | 1.22 | 7.43 | 1.08 | 0.96 |
| 11273 | -18.88 | 1.14 | 1.24 | 7.10 | 1.08 | 0.96 |
| 11274 | -19.00 | 1.15 | 1.24 | 6.77 | 1.09 | 0.96 |
| 11275 | -19.13 | 1.16 | 1.25 | 6.45 | 1.09 | 0.96 |

[Table 705]

| | | | | | | |
|---|---|---|---|---|---|---|
| 11276 | -19.25 | 1.16 | 1.26 | 6.14 | 1.10 | 0.96 |
| 11277 | -19.36 | 1.17 | 1.27 | 5.85 | 1.11 | 0.96 |
| 11278 | -19.47 | 1.18 | 1.28 | 5.56 | 1.11 | 0.95 |
| 11279 | -19.56 | 1.18 | 1.28 | 5.28 | 1.11 | 0.95 |
| 11280 | -19.64 | 1.19 | 1.29 | 5.02 | 1.12 | 0.95 |
| 11281 | -19.71 | 1.19 | 1.29 | 4.76 | 1.12 | 0.95 |
| 11282 | -19.77 | 1.19 | 1.29 | 4.50 | 1.13 | 0.95 |
| 11283 | -15.97 | 0.93 | 1.03 | 14.16 | 1.01 | 1.10 |
| 11284 | – | – | – | – | – | – |
| 11285 | -15.94 | 0.94 | 1.04 | 14.10 | 1.02 | 1.09 |
| 11286 | -15.92 | 0.97 | 1.07 | 13.81 | 1.03 | 1.08 |
| 11287 | -16.27 | 1.07 | 1.17 | 11.77 | 1.08 | 1.01 |
| 11288 | -17.37 | 1.18 | 1.29 | 8.49 | 1.13 | 0.97 |
| 11289 | -17.51 | 1.19 | 1.30 | 8.14 | 1.14 | 0.97 |
| 11290 | -17.64 | 1.20 | 1.31 | 7.80 | 1.14 | 0.96 |
| 11291 | -17.77 | 1.21 | 1.32 | 7.46 | 1.15 | 0.96 |
| 11292 | -17.90 | 1.22 | 1.33 | 7.14 | 1.15 | 0.96 |
| 11293 | -18.01 | 1.22 | 1.33 | 6.83 | 1.16 | 0.96 |
| 11294 | -18.12 | 1.23 | 1.34 | 6.52 | 1.16 | 0.96 |
| 11295 | -18.22 | 1.24 | 1.35 | 6.23 | 1.17 | 0.96 |
| 11296 | -18.31 | 1.24 | 1.35 | 5.95 | 1.17 | 0.96 |
| 11297 | -18.38 | 1.24 | 1.36 | 5.68 | 1.18 | 0.96 |
| 11298 | -18.45 | 1.25 | 1.36 | 5.42 | 1.18 | 0.96 |
| 11299 | -14.47 | 0.97 | 1.09 | 15.70 | 1.07 | 1.11 |
| 11300 | – | – | – | – | – | – |
| 11301 | – | – | – | – | – | – |
| 11302 | -14.46 | 0.98 | 1.10 | 15.61 | 1.07 | 1.11 |
| 11303 | -14.45 | 1.01 | 1.12 | 15.25 | 1.08 | 1.09 |
| 11304 | -14.87 | 1.12 | 1.23 | 12.99 | 1.13 | 1.02 |
| 11305 | -16.03 | 1.23 | 1.35 | 9.52 | 1.18 | 0.97 |
| 11306 | -16.17 | 1.24 | 1.36 | 9.16 | 1.19 | 0.97 |
| 11307 | -16.31 | 1.25 | 1.37 | 8.80 | 1.19 | 0.96 |
| 11308 | -16.44 | 1.26 | 1.38 | 8.44 | 1.20 | 0.96 |
| 11309 | -16.58 | 1.27 | 1.39 | 8.10 | 1.20 | 0.96 |
| 11310 | -16.70 | 1.28 | 1.40 | 7.77 | 1.21 | 0.96 |
| 11311 | -16.82 | 1.28 | 1.40 | 7.45 | 1.21 | 0.96 |
| 11312 | -16.92 | 1.29 | 1.41 | 7.14 | 1.22 | 0.96 |
| 11313 | -17.02 | 1.29 | 1.42 | 6.84 | 1.22 | 0.95 |
| 11314 | -17.10 | 1.30 | 1.42 | 6.55 | 1.23 | 0.95 |
| 11315 | -17.16 | 1.30 | 1.42 | 6.28 | 1.23 | 0.96 |
| 11316 | -13.02 | 1.01 | 1.13 | 17.34 | 1.12 | 1.13 |
| 11317 | – | – | – | – | – | – |
| 11318 | – | – | – | – | – | – |
| 11319 | -13.01 | 1.01 | 1.14 | 17.24 | 1.12 | 1.12 |
| 11320 | -13.02 | 1.05 | 1.18 | 16.69 | 1.14 | 1.09 |
| 11321 | -13.50 | 1.17 | 1.29 | 14.20 | 1.18 | 1.02 |
| 11322 | -14.71 | 1.28 | 1.41 | 10.51 | 1.23 | 0.97 |
| 11323 | -14.86 | 1.29 | 1.42 | 10.12 | 1.24 | 0.96 |
| 11324 | -15.01 | 1.30 | 1.43 | 9.74 | 1.24 | 0.96 |
| 11325 | -15.16 | 1.31 | 1.44 | 9.37 | 1.25 | 0.96 |

[Table 706]

| | | | | | | |
|---|---|---|---|---|---|---|
| 11326 | -15.30 | 1.32 | 1.45 | 9.00 | 1.25 | 0.96 |
| 11327 | -15.43 | 1.33 | 1.46 | 8.65 | 1.26 | 0.95 |
| 11328 | -15.56 | 1.34 | 1.47 | 8.30 | 1.26 | 0.95 |
| 11329 | -15.67 | 1.34 | 1.47 | 7.97 | 1.27 | 0.95 |
| 11330 | -15.77 | 1.35 | 1.48 | 7.66 | 1.27 | 0.95 |
| 11331 | -15.86 | 1.35 | 1.48 | 7.36 | 1.28 | 0.95 |
| 11332 | -15.92 | 1.36 | 1.49 | 7.08 | 1.28 | 0.95 |
| 11333 | -18.58 | 0.76 | 0.83 | 11.65 | 0.85 | 1.12 |
| 11334 | — | — | — | — | — | — |
| 11335 | — | — | — | — | — | — |
| 11336 | -18.46 | 0.77 | 0.84 | 11.82 | 0.85 | 1.11 |
| 11337 | -18.04 | 0.81 | 0.88 | 12.29 | 0.87 | 1.09 |
| 11338 | -17.51 | 0.90 | 0.97 | 12.03 | 0.93 | 1.04 |
| 11339 | -17.78 | 1.00 | 1.06 | 9.80 | 0.97 | 0.98 |
| 11340 | -17.85 | 1.01 | 1.07 | 9.50 | 0.98 | 0.98 |
| 11341 | -17.94 | 1.02 | 1.08 | 9.18 | 0.98 | 0.98 |
| 11342 | -18.03 | 1.03 | 1.09 | 8.85 | 0.99 | 0.97 |
| 11343 | -18.13 | 1.03 | 1.10 | 8.51 | 0.99 | 0.97 |
| 11344 | -18.25 | 1.04 | 1.11 | 8.16 | 1.00 | 0.97 |
| 11345 | -18.36 | 1.05 | 1.12 | 7.82 | 1.01 | 0.97 |
| 11346 | -18.49 | 1.06 | 1.12 | 7.46 | 1.01 | 0.96 |
| 11347 | -18.61 | 1.06 | 1.13 | 7.11 | 1.01 | 0.96 |
| 11348 | -18.74 | 1.07 | 1.14 | 6.74 | 1.02 | 0.96 |
| 11349 | -18.87 | 1.07 | 1.14 | 6.37 | 1.02 | 0.96 |
| 11350 | -16.90 | 0.80 | 0.88 | 13.35 | 0.90 | 1.15 |
| 11351 | — | — | — | — | — | — |
| 11352 | -16.78 | 0.81 | 0.89 | 13.50 | 0.91 | 1.14 |
| 11353 | -16.31 | 0.85 | 0.94 | 13.99 | 0.94 | 1.11 |
| 11354 | -15.87 | 0.95 | 1.03 | 13.46 | 0.98 | 1.05 |
| 11355 | -16.18 | 1.05 | 1.13 | 11.05 | 1.03 | 0.99 |
| 11356 | -16.26 | 1.06 | 1.14 | 10.72 | 1.04 | 0.99 |
| 11357 | -16.35 | 1.07 | 1.15 | 10.39 | 1.04 | 0.98 |
| 11358 | -16.45 | 1.08 | 1.16 | 10.05 | 1.05 | 0.98 |
| 11359 | -16.55 | 1.09 | 1.17 | 9.70 | 1.05 | 0.98 |
| 11360 | -16.66 | 1.10 | 1.18 | 9.35 | 1.06 | 0.97 |
| 11361 | -16.78 | 1.10 | 1.18 | 8.98 | 1.06 | 0.97 |
| 11362 | -16.91 | 1.11 | 1.19 | 8.62 | 1.07 | 0.97 |
| 11363 | -17.04 | 1.12 | 1.20 | 8.24 | 1.07 | 0.97 |
| 11364 | -17.18 | 1.12 | 1.20 | 7.86 | 1.08 | 0.97 |
| 11365 | -17.31 | 1.13 | 1.21 | 7.48 | 1.08 | 0.97 |
| 11366 | -15.06 | 0.84 | 0.94 | 15.37 | 0.97 | 1.17 |
| 11367 | — | — | — | — | — | — |
| 11368 | — | — | — | — | — | — |
| 11369 | -14.96 | 0.85 | 0.95 | 15.49 | 0.98 | 1.16 |
| 11370 | -14.55 | 0.90 | 1.00 | 15.81 | 1.00 | 1.13 |
| 11371 | -14.21 | 0.99 | 1.09 | 14.99 | 1.05 | 1.06 |
| 11372 | -14.58 | 1.10 | 1.19 | 12.36 | 1.09 | 1.00 |
| 11373 | -14.66 | 1.11 | 1.20 | 12.02 | 1.10 | 0.99 |
| 11374 | -14.75 | 1.12 | 1.21 | 11.67 | 1.10 | 0.99 |
| 11375 | -14.86 | 1.13 | 1.22 | 11.30 | 1.11 | 0.99 |

[Table 707]

| | | | | | | |
|---|---|---|---|---|---|---|
| 11376 | -14.97 | 1.14 | 1.23 | 10.93 | 1.11 | 0.98 |
| 11377 | -15.09 | 1.15 | 1.24 | 10.56 | 1.12 | 0.98 |
| 11378 | -15.21 | 1.16 | 1.25 | 10.17 | 1.12 | 0.98 |
| 11379 | -15.34 | 1.17 | 1.26 | 9.79 | 1.13 | 0.97 |
| 11380 | -15.48 | 1.17 | 1.26 | 9.40 | 1.13 | 0.97 |
| 11381 | -15.62 | 1.18 | 1.27 | 9.00 | 1.13 | 0.97 |
| 11382 | -15.77 | 1.18 | 1.27 | 8.60 | 1.14 | 0.97 |
| 11383 | -13.33 | 0.88 | 1.00 | 17.35 | 1.04 | 1.20 |
| 11384 | − | − | − | − | − | − |
| 11385 | − | − | − | − | − | − |
| 11386 | -13.24 | 0.89 | 1.00 | 17.45 | 1.04 | 1.19 |
| 11387 | -12.81 | 0.94 | 1.06 | 17.68 | 1.07 | 1.15 |
| 11388 | -12.57 | 1.04 | 1.15 | 16.57 | 1.11 | 1.07 |
| 11389 | -13.00 | 1.15 | 1.25 | 13.68 | 1.15 | 1.00 |
| 11390 | -13.09 | 1.16 | 1.27 | 13.31 | 1.15 | 1.00 |
| 11391 | -13.19 | 1.18 | 1.28 | 12.93 | 1.16 | 0.99 |
| 11392 | -13.30 | 1.19 | 1.29 | 12.54 | 1.16 | 0.99 |
| 11393 | -13.42 | 1.20 | 1.30 | 12.15 | 1.17 | 0.98 |
| 11394 | -13.54 | 1.20 | 1.31 | 11.75 | 1.17 | 0.98 |
| 11395 | -13.67 | 1.21 | 1.31 | 11.34 | 1.18 | 0.98 |
| 11396 | -13.82 | 1.22 | 1.32 | 10.93 | 1.18 | 0.97 |
| 11397 | -13.96 | 1.23 | 1.33 | 10.51 | 1.19 | 0.97 |
| 11398 | -14.11 | 1.23 | 1.34 | 10.09 | 1.19 | 0.97 |
| 11399 | -14.25 | 1.24 | 1.34 | 9.68 | 1.19 | 0.97 |
| 11400 | -11.54 | 0.92 | 1.06 | 19.49 | 1.10 | 1.21 |
| 11401 | − | − | − | − | − | − |
| 11402 | − | − | − | − | − | − |
| 11403 | -11.46 | 0.93 | 1.06 | 19.56 | 1.11 | 1.20 |
| 11404 | -11.12 | 0.99 | 1.11 | 19.56 | 1.13 | 1.16 |
| 11405 | -10.97 | 1.09 | 1.21 | 18.13 | 1.16 | 1.07 |
| 11406 | -11.47 | 1.21 | 1.32 | 14.95 | 1.20 | 1.00 |
| 11407 | -11.57 | 1.22 | 1.33 | 14.55 | 1.21 | 0.99 |
| 11408 | -11.67 | 1.23 | 1.34 | 14.15 | 1.21 | 0.99 |
| 11409 | -11.79 | 1.24 | 1.35 | 13.73 | 1.21 | 0.98 |
| 11410 | -11.91 | 1.25 | 1.36 | 13.31 | 1.22 | 0.98 |
| 11411 | -12.04 | 1.26 | 1.37 | 12.88 | 1.22 | 0.98 |
| 11412 | -12.18 | 1.27 | 1.38 | 12.44 | 1.23 | 0.97 |
| 11413 | -12.33 | 1.28 | 1.39 | 12.01 | 1.23 | 0.97 |
| 11414 | -12.48 | 1.28 | 1.39 | 11.56 | 1.24 | 0.97 |
| 11415 | -12.63 | 1.29 | 1.40 | 11.13 | 1.24 | 0.97 |
| 11416 | -12.77 | 1.29 | 1.41 | 10.70 | 1.25 | 0.97 |
| 11417 | -19.54 | 0.65 | 0.72 | 9.42 | 0.75 | 1.16 |
| 11418 | − | − | − | − | − | − |
| 11419 | − | − | − | − | − | − |
| 11420 | -19.28 | 0.66 | 0.72 | 9.85 | 0.76 | 1.16 |
| 11421 | -17.72 | 0.72 | 0.79 | 12.32 | 0.82 | 1.14 |
| 11422 | -16.25 | 0.81 | 0.88 | 14.01 | 0.88 | 1.09 |
| 11423 | -15.56 | 0.91 | 0.96 | 13.30 | 0.92 | 1.02 |
| 11424 | -15.53 | 0.92 | 0.97 | 13.10 | 0.93 | 1.02 |
| 11425 | -15.52 | 0.92 | 0.98 | 12.88 | 0.93 | 1.01 |

[Table 708]

| 11426 | -15.51 | 0.93 | 0.99 | 12.64 | 0.94 | 1.01 |
|-------|--------|------|------|-------|------|------|
| 11427 | -15.52 | 0.94 | 0.99 | 12.37 | 0.94 | 1.00 |
| 11428 | -15.53 | 0.95 | 1.00 | 12.09 | 0.95 | 1.00 |
| 11429 | -15.56 | 0.96 | 1.01 | 11.78 | 0.95 | 0.99 |
| 11430 | -15.61 | 0.97 | 1.02 | 11.46 | 0.95 | 0.99 |
| 11431 | -15.66 | 0.97 | 1.02 | 11.11 | 0.96 | 0.98 |
| 11432 | -15.74 | 0.98 | 1.03 | 10.73 | 0.96 | 0.98 |
| 11433 | -15.84 | 0.99 | 1.03 | 10.33 | 0.96 | 0.98 |
| 11434 | -17.23 | 0.70 | 0.78 | 11.96 | 0.84 | 1.21 |
| 11435 | – | – | – | – | – | – |
| 11436 | – | – | – | – | – | – |
| 11437 | -17.00 | 0.71 | 0.79 | 12.36 | 0.84 | 1.20 |
| 11438 | -15.61 | 0.77 | 0.85 | 14.57 | 0.89 | 1.17 |
| 11439 | -14.30 | 0.86 | 0.94 | 15.88 | 0.95 | 1.11 |
| 11440 | -13.69 | 0.96 | 1.03 | 14.87 | 0.99 | 1.04 |
| 11441 | -13.67 | 0.97 | 1.04 | 14.65 | 0.99 | 1.03 |
| 11442 | -13.65 | 0.98 | 1.05 | 14.40 | 1.00 | 1.02 |
| 11443 | -13.66 | 0.99 | 1.05 | 14.14 | 1.00 | 1.02 |
| 11444 | -13.67 | 1.00 | 1.06 | 13.85 | 1.01 | 1.01 |
| 11445 | -13.69 | 1.01 | 1.07 | 13.54 | 1.01 | 1.01 |
| 11446 | -13.72 | 1.01 | 1.08 | 13.22 | 1.01 | 1.00 |
| 11447 | -13.77 | 1.02 | 1.09 | 12.86 | 1.02 | 1.00 |
| 11448 | -13.84 | 1.03 | 1.09 | 12.49 | 1.02 | 0.99 |
| 11449 | -13.93 | 1.04 | 1.10 | 12.09 | 1.02 | 0.99 |
| 11450 | -14.03 | 1.04 | 1.10 | 11.65 | 1.03 | 0.99 |
| 11451 | -15.09 | 0.74 | 0.85 | 14.40 | 0.92 | 1.25 |
| 11452 | – | – | – | – | – | – |
| 11453 | – | – | – | – | – | – |
| 11454 | -14.88 | 0.75 | 0.85 | 14.77 | 0.92 | 1.25 |
| 11455 | -13.45 | 0.82 | 0.92 | 17.01 | 0.97 | 1.20 |
| 11456 | -12.31 | 0.91 | 1.01 | 17.89 | 1.02 | 1.12 |
| 11457 | -11.79 | 1.01 | 1.10 | 16.55 | 1.06 | 1.05 |
| 11458 | -11.78 | 1.02 | 1.11 | 16.29 | 1.06 | 1.04 |
| 11459 | -11.78 | 1.03 | 1.11 | 16.02 | 1.06 | 1.03 |
| 11460 | -11.79 | 1.04 | 1.12 | 15.72 | 1.07 | 1.02 |
| 11461 | -11.81 | 1.05 | 1.13 | 15.41 | 1.07 | 1.02 |
| 11462 | -11.83 | 1.06 | 1.14 | 15.07 | 1.07 | 1.01 |
| 11463 | -11.88 | 1.07 | 1.15 | 14.71 | 1.08 | 1.01 |
| 11464 | -11.94 | 1.08 | 1.16 | 14.32 | 1.08 | 1.00 |
| 11465 | -12.01 | 1.09 | 1.16 | 13.91 | 1.08 | 1.00 |
| 11466 | -12.11 | 1.09 | 1.17 | 13.48 | 1.09 | 0.99 |
| 11467 | -12.22 | 1.10 | 1.17 | 13.02 | 1.09 | 0.99 |
| 11468 | -12.73 | 0.79 | 0.92 | 17.41 | 1.00 | 1.29 |
| 11469 | – | – | – | – | – | – |
| 11470 | – | – | – | – | – | – |
| 11471 | -12.55 | 0.80 | 0.92 | 17.72 | 1.01 | 1.28 |
| 11472 | -11.33 | 0.87 | 0.99 | 19.54 | 1.05 | 1.22 |
| 11473 | -10.36 | 0.96 | 1.07 | 19.97 | 1.09 | 1.14 |
| 11474 | -9.94 | 1.07 | 1.16 | 18.24 | 1.12 | 1.05 |
| 11475 | -9.94 | 1.08 | 1.17 | 17.95 | 1.12 | 1.04 |

[Table 709]

| 11476 | -9.94 | 1.09 | 1.18 | 17.64 | 1.12 | 1.03 |
|-------|-------|------|------|-------|------|------|
| 11477 | -9.96 | 1.10 | 1.19 | 17.31 | 1.13 | 1.03 |
| 11478 | -9.98 | 1.11 | 1.20 | 16.96 | 1.13 | 1.02 |
| 11479 | -10.02 | 1.12 | 1.21 | 16.58 | 1.13 | 1.01 |
| 11480 | -10.07 | 1.13 | 1.22 | 16.19 | 1.14 | 1.01 |
| 11481 | -10.14 | 1.14 | 1.22 | 15.77 | 1.14 | 1.00 |
| 11482 | -10.22 | 1.15 | 1.23 | 15.32 | 1.14 | 1.00 |
| 11483 | -10.32 | 1.15 | 1.24 | 14.85 | 1.15 | 0.99 |
| 11484 | -10.44 | 1.16 | 1.24 | 14.37 | 1.15 | 0.99 |
| 11485 | -10.62 | 0.84 | 0.98 | 20.17 | 1.08 | 1.32 |
| 11486 | — | — | — | — | — | — |
| 11487 | — | — | — | — | — | — |
| 11488 | -10.45 | 0.85 | 0.99 | 20.45 | 1.09 | 1.31 |
| 11489 | -9.26 | 0.92 | 1.06 | 22.07 | 1.12 | 1.24 |
| 11490 | -8.46 | 1.02 | 1.14 | 22.03 | 1.15 | 1.14 |
| 11491 | -8.15 | 1.12 | 1.23 | 19.89 | 1.18 | 1.05 |
| 11492 | -8.15 | 1.13 | 1.24 | 19.56 | 1.18 | 1.04 |
| 11493 | -8.16 | 1.14 | 1.25 | 19.21 | 1.18 | 1.03 |
| 11494 | -8.18 | 1.16 | 1.26 | 18.84 | 1.19 | 1.03 |
| 11495 | -8.21 | 1.17 | 1.26 | 18.45 | 1.19 | 1.02 |
| 11496 | -8.26 | 1.18 | 1.27 | 18.04 | 1.19 | 1.01 |
| 11497 | -8.31 | 1.19 | 1.28 | 17.60 | 1.19 | 1.01 |
| 11498 | -8.39 | 1.19 | 1.29 | 17.14 | 1.20 | 1.00 |
| 11499 | -8.47 | 1.20 | 1.30 | 16.67 | 1.20 | 0.99 |
| 11500 | -8.58 | 1.21 | 1.30 | 16.17 | 1.20 | 0.99 |
| 11501 | -8.69 | 1.22 | 1.31 | 15.67 | 1.20 | 0.99 |

[Table 710]

| Case | Discharge Temperature (Difference) | (Relative) Condensing Pressure | (Relative) Evaporating Pressure | Temperature Glide (Difference) | (Relative) Capacity | (Relative) Coefficient of Performance |
|---|---|---|---|---|---|---|
| A2 | -14.94 | 0.79 | 0.84 | -0.08 | 0.86 | 1.03 |
| A8 | -12.86 | 0.79 | 0.84 | -0.09 | 0.87 | 1.03 |
| A13 | -10.05 | 0.80 | 0.84 | -0.09 | 0.88 | 1.03 |
| A40 | -23.89 | 0.98 | 1.03 | 2.35 | 0.98 | 0.97 |
| A50 | -22.76 | 1.05 | 1.10 | 1.23 | 1.04 | 0.95 |
| A55 | -21.81 | 1.10 | 1.15 | 0.60 | 1.07 | 0.94 |
| A60 | 20.53 | 1.14 | 1.19 | 0.14 | 1.11 | 0.93 |
| A65 | -18.81 | 1.18 | 1.23 | -0.09 | 1.15 | 0.92 |
| A118 | -23.62 | 0.97 | 1.02 | 2.41 | 0.98 | 0.97 |
| A123 | -23.23 | 1.00 | 1.05 | 2.00 | 1.00 | 0.97 |
| A128 | -22.48 | 1.04 | 1.10 | 1.31 | 1.03 | 0.96 |
| A133 | -21.54 | 1.09 | 1.15 | 0.67 | 1.07 | 0.95 |
| A138 | -19.95 | 1.13 | 1.18 | 0.24 | 1.10 | 0.94 |
| A143 | -18.60 | 1.18 | 1.23 | -0.09 | 1.14 | 0.92 |
| A169 | -23.23 | 0.97 | 1.02 | 2.32 | 0.98 | 0.97 |
| A173 | -22.95 | 0.99 | 1.04 | 2.06 | 0.99 | 0.97 |
| A178 | -22.19 | 1.03 | 1.09 | 1.38 | 1.03 | 0.96 |
| A183 | -21.25 | 1.08 | 1.14 | 0.74 | 1.07 | 0.95 |
| A188 | -20.02 | 1.13 | 1.19 | 0.22 | 1.10 | 0.94 |
| A193 | -18.38 | 1.17 | 1.22 | -0.08 | 1.14 | 0.93 |
| A243 | -22.83 | 0.97 | 1.02 | 2.22 | 0.98 | 0.97 |
| A246 | -22.68 | 0.98 | 1.03 | 2.10 | 0.99 | 0.97 |
| A251 | -21.90 | 1.03 | 1.08 | 1.45 | 1.02 | 0.96 |
| A256 | -20.95 | 1.07 | 1.13 | 0.82 | 1.06 | 0.95 |
| A261 | -19.74 | 1.12 | 1.18 | 0.29 | 1.10 | 0.94 |
| A266 | -18.12 | 1.16 | 1.22 | -0.05 | 1.14 | 0.93 |
| A291 | -22.56 | 0.96 | 1.02 | 2.25 | 0.97 | 0.98 |
| A294 | -22.41 | 0.97 | 1.02 | 2.13 | 0.98 | 0.98 |
| A299 | -21.60 | 1.01 | 1.07 | 1.52 | 1.02 | 0.96 |
| A304 | -20.64 | 1.06 | 1.12 | 0.90 | 1.05 | 0.95 |
| A309 | -19.42 | 1.11 | 1.17 | 0.37 | 1.09 | 0.94 |
| A314 | -17.84 | 1.15 | 1.21 | 0.00 | 1.13 | 0.93 |
| A337 | -22.14 | 0.96 | 1.01 | 2.15 | 0.97 | 0.98 |
| A344 | -21.29 | 1.00 | 1.06 | 1.57 | 1.01 | 0.97 |
| A349 | -20.31 | 1.05 | 1.11 | 0.99 | 1.05 | 0.96 |
| A354 | -19.08 | 1.10 | 1.16 | 0.46 | 1.09 | 0.95 |
| A359 | -17.51 | 1.14 | 1.20 | 0.08 | 1.12 | 0.94 |
| A406 | -21.70 | 0.96 | 1.01 | 2.05 | 0.97 | 0.98 |
| A411 | -20.98 | 0.99 | 1.05 | 1.63 | 1.00 | 0.97 |
| A416 | -19.96 | 1.04 | 1.10 | 1.08 | 1.04 | 0.96 |
| A421 | -18.72 | 1.08 | 1.15 | 0.57 | 1.08 | 0.95 |
| A426 | -17.14 | 1.13 | 1.19 | 0.19 | 1.12 | 0.94 |
| A449 | -21.42 | 0.94 | 1.00 | 2.05 | 0.97 | 0.98 |
| A455 | -20.67 | 0.98 | 1.04 | 1.67 | 1.00 | 0.98 |
| A460 | -19.61 | 1.02 | 1.09 | 1.16 | 1.03 | 0.97 |
| A465 | -18.34 | 1.07 | 1.13 | 0.69 | 1.07 | 0.95 |
| A470 | -16.75 | 1.11 | 1.18 | 0.32 | 1.11 | 0.94 |
| A512 | -20.96 | 0.94 | 1.00 | 1.95 | 0.97 | 0.99 |
| A517 | -20.36 | 0.97 | 1.02 | 1.70 | 0.99 | 0.98 |
| A522 | -19.25 | 1.01 | 1.07 | 1.25 | 1.02 | 0.97 |

[Table 711]

| A522 | -19.25 | 1.01 | 1.07 | 1.25 | 1.02 | 0.97 |
| A527 | -17.93 | 1.05 | 1.12 | 0.82 | 1.06 | 0.96 |
| A532 | -16.32 | 1.10 | 1.16 | 0.47 | 1.10 | 0.95 |
| A554 | -20.68 | 0.93 | 0.98 | 1.93 | 0.96 | 0.99 |
| A559 | -20.05 | 0.95 | 1.01 | 1.71 | 0.98 | 0.98 |
| A564 | -18.89 | 0.99 | 1.06 | 1.32 | 1.01 | 0.97 |
| A569 | -17.52 | 1.04 | 1.10 | 0.94 | 1.05 | 0.96 |
| A574 | -15.86 | 1.08 | 1.14 | 0.63 | 1.09 | 0.95 |
| A595 | -20.20 | 0.92 | 0.98 | 1.82 | 0.95 | 0.99 |
| A599 | -19.75 | 0.94 | 1.00 | 1.70 | 0.97 | 0.99 |
| A604 | -18.52 | 0.98 | 1.04 | 1.38 | 1.00 | 0.98 |
| A609 | -17.10 | 1.02 | 1.08 | 1.06 | 1.04 | 0.97 |
| A614 | -15.39 | 1.07 | 1.13 | 0.80 | 1.08 | 0.96 |
| A655 | -19.69 | 0.92 | 0.97 | 1.72 | 0.95 | 0.99 |
| A658 | -19.45 | 0.92 | 0.98 | 1.68 | 0.96 | 0.99 |
| A663 | -18.16 | 0.96 | 1.02 | 1.42 | 0.99 | 0.98 |
| A668 | -16.67 | 1.01 | 1.07 | 1.17 | 1.02 | 0.97 |
| A673 | -14.91 | 1.05 | 1.11 | 0.96 | 1.07 | 0.96 |
| A693 | -19.41 | 0.90 | 0.96 | 1.66 | 0.94 | 1.00 |
| A696 | -19.16 | 0.91 | 0.97 | 1.63 | 0.95 | 1.00 |
| A701 | -17.80 | 0.95 | 1.01 | 1.45 | 0.98 | 0.99 |
| A706 | -16.25 | 0.99 | 1.05 | 1.26 | 1.02 | 0.98 |
| A711 | -14.42 | 1.03 | 1.09 | 1.11 | 1.06 | 0.97 |
| A747 | -18.88 | 0.89 | 0.95 | 1.55 | 0.94 | 1.00 |
| A754 | -17.45 | 0.93 | 0.99 | 1.44 | 0.97 | 0.99 |
| A759 | -15.83 | 0.97 | 1.03 | 1.33 | 1.01 | 0.98 |
| A764 | -13.94 | 1.01 | 1.07 | 1.24 | 1.04 | 0.97 |
| A783 | -18.33 | 0.89 | 0.94 | 1.44 | 0.93 | 1.00 |
| A788 | -17.12 | 0.92 | 0.97 | 1.40 | 0.96 | 1.00 |
| A793 | -15.43 | 0.95 | 1.01 | 1.36 | 0.99 | 0.99 |
| A798 | -13.46 | 0.99 | 1.05 | 1.34 | 1.03 | 0.98 |
| A816 | -18.06 | 0.87 | 0.92 | 1.31 | 0.92 | 1.01 |
| A822 | -16.80 | 0.90 | 0.95 | 1.34 | 0.95 | 1.00 |
| A827 | -15.04 | 0.94 | 0.99 | 1.37 | 0.98 | 0.99 |
| A832 | -13.00 | 0.97 | 1.03 | 1.42 | 1.02 | 0.98 |
| A866 | -17.50 | 0.86 | 0.91 | 1.17 | 0.92 | 1.01 |
| A871 | -16.50 | 0.88 | 0.94 | 1.23 | 0.94 | 1.00 |
| A876 | -14.66 | 0.92 | 0.97 | 1.33 | 0.97 | 1.00 |
| A881 | -12.56 | 0.95 | 1.01 | 1.45 | 1.00 | 0.99 |
| A898 | -17.26 | 0.85 | 0.90 | 0.99 | 0.90 | 1.01 |
| A902 | -16.22 | 0.87 | 0.92 | 1.09 | 0.92 | 1.01 |
| A907 | -14.31 | 0.90 | 0.95 | 1.25 | 0.96 | 1.00 |
| A912 | -12.13 | 0.93 | 0.98 | 1.44 | 0.99 | 0.99 |
| A943 | -16.69 | 0.84 | 0.89 | 0.82 | 0.90 | 1.02 |
| A947 | -15.96 | 0.85 | 0.90 | 0.91 | 0.91 | 1.01 |
| A952 | -13.98 | 0.88 | 0.93 | 1.13 | 0.94 | 1.00 |
| A957 | -11.73 | 0.91 | 0.96 | 1.38 | 0.97 | 1.00 |
| A973 | -16.12 | 0.83 | 0.88 | 0.62 | 0.89 | 1.02 |
| A976 | -15.74 | 0.83 | 0.88 | 0.68 | 0.90 | 1.02 |
| A981 | -13.69 | 0.86 | 0.91 | 0.97 | 0.93 | 1.01 |

[Table 712]

| A986 | -11.36 | 0.89 | 0.94 | 1.27 | 0.96 | 1.00 |
|---|---|---|---|---|---|---|
| A1001 | -15.93 | 0.81 | 0.86 | 0.35 | 0.88 | 1.02 |
| A1004 | -15.54 | 0.81 | 0.86 | 0.41 | 0.88 | 1.02 |
| A1009 | -13.42 | 0.84 | 0.89 | 0.75 | 0.91 | 1.01 |
| A1014 | -11.03 | 0.88 | 0.92 | 1.11 | 0.94 | 1.01 |
| A1041 | -15.37 | 0.80 | 0.85 | 0.10 | 0.87 | 1.02 |
| A1048 | -25.60 | 0.83 | 0.87 | 0.49 | 0.90 | 1.02 |
| A1053 | -10.72 | 0.86 | 0.90 | 0.89 | 0.93 | 1.01 |
| A1067 | -15.98 | 0.79 | 0.83 | -0.05 | 0.86 | 1.03 |
| A1113 | -15.40 | 0.79 | 0.83 | -0.03 | 0.86 | 1.03 |
| A1119 | -18.64 | 0.78 | 0.82 | 0.10 | 0.84 | 1.03 |
| A1136 | -18.56 | 0.78 | 0.82 | 0.10 | 0.84 | 1.03 |
| A1160 | -14.74 | 0.79 | 0.83 | -0.01 | 0.86 | 1.02 |
| A1161 | -21.11 | 0.76 | 0.81 | 0.37 | 0.82 | 1.03 |
| A1171 | -18.11 | 0.78 | 0.82 | 0.14 | 0.84 | 1.02 |
| A1182 | -20.93 | 0.76 | 0.81 | 0.40 | 0.82 | 1.03 |
| A1203 | -17.59 | 0.78 | 0.82 | 0.19 | 0.84 | 1.02 |
| A1209 | -23.27 | 0.74 | 0.78 | 0.78 | 0.80 | 1.03 |
| A1234 | -20.58 | 0.76 | 0.80 | 0.48 | 0.82 | 1.02 |
| A1263 | -23.09 | 0.74 | 0.78 | 0.36 | 0.80 | 1.03 |
| A1290 | -20.17 | 0.76 | 0.80 | 0.59 | 0.82 | 1.02 |
| A1291 | -25.25 | 0.72 | 0.76 | 1.29 | 0.77 | 1.03 |
| A1338 | -22.82 | 0.74 | 0.78 | 1.02 | 0.79 | 1.02 |
| A1351 | -25.07 | 0.72 | 0.76 | 1.48 | 0.77 | 1.02 |
| A1379 | -27.09 | 0.70 | 0.73 | 1.85 | 0.74 | 1.03 |
| A1396 | -22.47 | 0.74 | 0.77 | 1.22 | 0.79 | 1.02 |
| A1400 | -27.07 | 0.70 | 0.73 | 1.90 | 0.74 | 1.03 |
| A1428 | -24.84 | 0.72 | 0.75 | 1.73 | 0.77 | 1.02 |
| A1453 | -28.88 | 0.67 | 0.70 | 2.32 | 0.71 | 1.03 |
| A1463 | -26.93 | 0.70 | 0.72 | 2.19 | 0.74 | 1.03 |
| A1493 | -24.55 | 0.72 | 0.74 | 2.04 | 0.76 | 1.02 |
| A1498 | -28.84 | 0.67 | 0.69 | 2.51 | 0.71 | 1.03 |
| A1514 | -29.76 | 0.66 | 0.68 | 2.57 | 0.70 | 1.04 |
| A1548 | -26.73 | 0.69 | 0.72 | 2.55 | 0.73 | 1.02 |
| A1554 | -30.66 | 0.64 | 0.66 | 2.71 | 0.68 | 1.03 |
| A1560 | -29.73 | 0.66 | 0.67 | 2.79 | 0.69 | 1.03 |
| A1586 | -28.74 | 0.67 | 0.69 | 2.89 | 0.71 | 1.03 |
| A1617 | -26.50 | 0.69 | 0.71 | 2.96 | 0.73 | 1.02 |
| A1623 | -30.64 | 0.64 | 0.65 | 3.01 | 0.68 | 1.03 |
| A1650 | -29.66 | 0.65 | 0.67 | 3.20 | 0.69 | 1.03 |
| A1677 | -28.60 | 0.66 | 0.68 | 3.34 | 0.70 | 1.03 |
| A1683 | -32.52 | 0.61 | 0.62 | 2.86 | 0.64 | 1.04 |
| A1712 | -31.58 | 0.62 | 0.63 | 3.18 | 0.66 | 1.03 |
| A1739 | -30.60 | 0.63 | 0.64 | 3.45 | 0.67 | 1.03 |
| A1750 | -33.49 | 0.59 | 0.60 | 2.79 | 0.63 | 1.04 |
| A1766 | -30.56 | 0.65 | 0.65 | 3.67 | 0.68 | 1.03 |
| A1772 | -33.51 | 0.59 | 0.60 | 2.86 | 0.62 | 1.04 |
| A1793 | -28.44 | 0.66 | 0.66 | 3.83 | 0.69 | 1.03 |
| A1800 | -32.57 | 0.60 | 0.61 | 3.27 | 0.64 | 1.04 |
| A1828 | -31.58 | 0.61 | 0.62 | 3.63 | 0.65 | 1.03 |

[Table 713]

| | | | | | | |
|---|---|---|---|---|---|---|
| A1839 | -34.53 | 0.57 | 0.58 | 2.69 | 0.61 | 1.04 |
| A1857 | -30.54 | 0.63 | 0.63 | 3.94 | 0.66 | 1.03 |
| A1864 | -34.56 | 0.57 | 0.58 | 2.76 | 0.60 | 1.04 |
| A1886 | -29.44 | 0.64 | 0.64 | 4.19 | 0.67 | 1.03 |
| A1893 | -33.60 | 0.58 | 0.59 | 3.25 | 0.62 | 1.04 |
| A1909 | -35.61 | 0.55 | 0.56 | 2.42 | 0.59 | 1.04 |
| A1923 | -32.61 | 0.60 | 0.60 | 3.71 | 0.63 | 1.04 |
| A1953 | -31.57 | 0.61 | 0.61 | 4.12 | 0.64 | 1.03 |
| A1962 | -35.69 | 0.55 | 0.55 | 2.54 | 0.58 | 1.04 |
| A1982 | -31.48 | 0.62 | 0.62 | 4.46 | 0.65 | 1.03 |
| A1983 | -36.74 | 0.53 | 0.54 | 2.04 | 0.57 | 1.05 |
| A1992 | -34.71 | 0.56 | 0.56 | 3.12 | 0.60 | 1.04 |
| A2021 | -33.71 | 0.57 | 0.57 | 3.67 | 0.61 | 1.04 |
| A2032 | -37.89 | 0.52 | 0.52 | 1.51 | 0.55 | 1.05 |
| A2050 | -32.67 | 0.59 | 0.58 | 4.17 | 0.62 | 1.04 |
| A2059 | -36.91 | 0.53 | 0.53 | 2.19 | 0.56 | 1.04 |
| A2079 | -31.58 | 0.60 | 0.59 | 4.61 | 0.63 | 1.03 |
| A2080 | -38.03 | 0.51 | 0.51 | 1.59 | 0.54 | 1.05 |
| A2090 | -35.91 | 0.54 | 0.54 | 2.85 | 0.57 | 1.04 |
| A2120 | -34.89 | 0.55 | 0.55 | 3.49 | 0.58 | 1.04 |
| A2150 | -33.84 | 0.56 | 0.56 | 4.08 | 0.60 | 1.04 |
| A2160 | -38.25 | 0.51 | 0.51 | 1.70 | 0.54 | 1.05 |
| A2180 | -32.76 | 0.57 | 0.56 | 4.61 | 0.61 | 1.04 |
| A2181 | -37.22 | 0.52 | 0.51 | 2.43 | 0.55 | 1.04 |
| A2185 | -36.18 | 0.53 | 0.52 | 3.14 | 0.56 | 1.04 |
| A2187 | -35.13 | 0.54 | 0.53 | 3.82 | 0.57 | 1.04 |
| A2189 | -34.03 | 0.55 | 0.54 | 4.43 | 0.58 | 1.04 |
| A2191 | -38.67 | 0.49 | 0.49 | 1.83 | 0.52 | 1.05 |
| A2193 | -37.60 | 0.51 | 0.49 | 2.61 | 0.54 | 1.05 |
| A2195 | -36.52 | 0.52 | 0.50 | 3.35 | 0.55 | 1.04 |
| A2197 | -35.43 | 0.52 | 0.51 | 4.04 | 0.56 | 1.04 |
| A2199 | -39.19 | 0.48 | 0.47 | 1.88 | 0.51 | 1.05 |
| A2201 | -38.09 | 0.49 | 0.47 | 2.67 | 0.52 | 1.05 |
| A2203 | -36.99 | 0.50 | 0.48 | 3.41 | 0.53 | 1.05 |
| A2205 | -39.86 | 0.46 | 0.44 | 1.75 | 0.49 | 1.05 |
| A2207 | -38.75 | 0.47 | 0.45 | 2.52 | 0.50 | 1.05 |
| A2209 | -40.77 | 0.44 | 0.42 | 1.35 | 0.47 | 1.05 |

[Ex1-1 to Ex1-57]

In Ex1-1 to Ex1-57, a working medium in which propane, HFO-1123, and HFO-1234yf were mixed in the compositions shown in Tables 714 and 715. The combustion heat amount (in the table, described as "HOC"), the discharge temperature (in the table, described as "Td"), the condensing pressure (in the table, described as "Pc"), CAP, the temperature glide (in the table, described as "TG"), and the pressure loss (in the table, described as "dP") of the working medium were measured. The measurement methods of the combustion heat amount, the discharge temperature, the condensing pressure, CAP, and the temperature glide are as described above. The pressure loss was measured by the method described below. The measurement results are shown in Tables 714 and 715 together with the composition of the working medium. In the determination column, a case in which the combustion heat amount is 19.000 MJ/kg or more is denoted as X, and a case in which the combustion heat amount is less than 19.000 MJ/kg is denoted as O. In the table, the unit of the discharge temperature and the temperature glide is "°C". Ex1-1 to Ex1-17 are Examples, and Ex1-18 to Ex1-57 are Comparative Examples.

-Pressure Loss-

The pressure loss is represented by the following formula using a coefficient of friction f (-), a length L (m), a diameter d (m), an evaporator capacity $\Phi_0$ (kW), evaporation latent heat $W_r$ (kJ/kg), and a specific volume $v_s$ (m$^3$/kg). In the disclosure, the pressure loss is indicated in parentheses in the second half of the formula, and is indicated by a relative pressure loss with respect to R410A.

[Mathematical Formula 4]

$$\Delta P_{loss} = \left( f \cdot \frac{L}{2d^5} \cdot \Phi_0{}^2 \right) \cdot \left( \frac{v_s}{w_r{}^2} \right)$$

[Table 714]

| | composition | | | mass ratio | | HOC | | | | | | |
|---|---|---|---|---|---|---|---|---|---|---|---|---|
| | propane | HFO-1123 | HFO-1234yf | propane | HFO-1123 | MJ/kg | Evaluation | Td | Pc | CAP | TG | dP |
| | wt% | wt% | wt% | | | | | | | | | |
| Ex1-1 | 13.0 | 62.0 | 25.0 | 17.33 | 82.67 | 15.441 | O | -24.40 | 0.97 | 0.93 | 5.13 | 1.32 |
| Ex1-2 | 15.0 | 70.0 | 15.0 | 17.65 | 82.35 | 16.095 | O | -24.52 | 1.05 | 0.98 | 3.65 | 1.26 |
| Ex1-3 | 16.0 | 64.0 | 20.0 | 20.00 | 80.00 | 16.482 | O | -24.48 | 1.00 | 0.95 | 4.52 | 1.27 |
| Ex1-4 | 18.0 | 62.0 | 20.0 | 22.50 | 77.50 | 17.195 | O | -24.52 | 0.99 | 0.94 | 4.64 | 1.25 |
| Ex1-5 | 18.5 | 61.5 | 20.0 | 23.13 | 76.88 | 17.374 | O | -24.52 | 0.99 | 0.94 | 4.68 | 1.25 |
| Ex1-6 | 19.0 | 61.0 | 20.0 | 23.75 | 76.25 | 17.552 | O | -24.52 | 0.98 | 0.94 | 4.72 | 1.24 |
| Ex1-7 | 19.5 | 60.5 | 20.0 | 24.38 | 75.63 | 17.730 | O | -24.53 | 0.98 | 0.93 | 4.76 | 1.24 |
| Ex1-8 | 20.0 | 60.0 | 20.0 | 25.00 | 75.00 | 17.909 | O | -24.52 | 0.98 | 0.93 | 4.80 | 1.24 |
| Ex1-9 | 20.5 | 59.5 | 20.0 | 25.63 | 74.38 | 18.087 | O | -24.52 | 0.97 | 0.93 | 4.84 | 1.23 |
| Ex1-10 | 21.0 | 59.0 | 20.0 | 26.25 | 73.75 | 18.266 | O | -24.52 | 0.97 | 0.93 | 4.89 | 1.23 |
| Ex1-11 | 21.5 | 58.5 | 20.0 | 26.88 | 73.13 | 18.444 | O | -24.51 | 0.97 | 0.93 | 4.94 | 1.22 |
| Ex1-12 | 22.0 | 58.0 | 20.0 | 27.50 | 72.50 | 18.623 | O | -24.51 | 0.96 | 0.92 | 4.99 | 1.22 |
| Ex1-13 | 22.5 | 57.5 | 20.0 | 28.13 | 71.88 | 18.801 | O | -24.50 | 0.96 | 0.92 | 5.04 | 1.22 |
| Ex1-14 | 23.0 | 57.0 | 20.0 | 28.75 | 71.25 | 18.979 | O | -24.49 | 0.96 | 0.92 | 5.09 | 1.21 |
| Ex1-15 | 15.0 | 75.0 | 10.0 | 16.67 | 83.33 | 16.065 | O | -24.71 | 1.10 | 1.01 | 2.70 | 1.24 |
| Ex1-16 | 3.0 | 85.0 | 12.0 | 3.41 | 96.59 | 11.279 | O | -23.94 | 1.11 | 1.02 | 2.84 | 1.32 |
| Ex1-17 | 12.0 | 62.0 | 26.0 | 16.22 | 83.78 | 15.090 | O | -24.36 | 0.96 | 0.92 | 5.26 | 1.33 |
| Ex1-18 | 23.5 | 66.5 | 10.0 | 26.11 | 73.89 | 19.098 | X | -24.37 | 1.04 | 0.97 | 3.93 | 1.17 |
| Ex1-19 | 24.0 | 66.0 | 10.0 | 26.67 | 73.33 | 19.276 | X | -24.34 | 1.04 | 0.97 | 4.02 | 1.17 |
| Ex1-20 | 24.5 | 65.5 | 10.0 | 27.22 | 72.78 | 19.455 | X | -24.30 | 1.03 | 0.97 | 4.12 | 1.16 |
| Ex1-21 | 25.0 | 65.0 | 10.0 | 27.78 | 72.22 | 19.633 | X | -24.26 | 1.03 | 0.97 | 4.21 | 1.16 |
| Ex1-22 | 25.5 | 64.5 | 10.0 | 28.33 | 71.67 | 19.811 | X | -24.22 | 1.02 | 0.96 | 4.31 | 1.15 |
| Ex1-23 | 26.0 | 64.0 | 10.0 | 28.89 | 71.11 | 19.990 | X | -24.18 | 1.02 | 0.96 | 4.41 | 1.15 |
| Ex1-24 | 26.5 | 63.5 | 10.0 | 29.44 | 70.56 | 20.168 | X | -24.15 | 1.02 | 0.96 | 4.51 | 1.14 |
| Ex1-25 | 27.0 | 63.0 | 10.0 | 30.00 | 70.00 | 20.347 | X | -24.11 | 1.01 | 0.96 | 4.61 | 1.14 |
| Ex1-26 | 27.5 | 62.5 | 10.0 | 30.56 | 69.44 | 20.525 | X | -24.07 | 1.01 | 0.96 | 4.71 | 1.13 |
| Ex1-27 | 28.0 | 62.0 | 10.0 | 31.11 | 68.89 | 20.703 | X | -24.03 | 1.00 | 0.95 | 4.81 | 1.13 |
| Ex1-28 | 28.5 | 61.5 | 10.0 | 31.67 | 68.33 | 20.882 | X | -23.99 | 1.00 | 0.95 | 4.90 | 1.13 |
| Ex1-29 | 29.0 | 61.0 | 10.0 | 32.22 | 67.78 | 21.060 | X | -23.95 | 1.00 | 0.95 | 5.00 | 1.12 |
| Ex1-30 | 29.5 | 60.5 | 10.0 | 32.78 | 67.22 | 21.239 | X | -23.91 | 0.99 | 0.95 | 5.10 | 1.12 |
| Ex1-31 | 30.0 | 60.0 | 10.0 | 33.33 | 66.67 | 21.417 | X | -23.88 | 0.99 | 0.94 | 5.19 | 1.11 |

[Table 715]

| | composition | | | mass ratio | | HOC | | Td | Pc | CAP | TG | dP |
|---|---|---|---|---|---|---|---|---|---|---|---|---|
| | propane | HFO-1123 | HFO-1234yf | propane | HFO-1123 | MJ/kg | Evaluation | | | | | |
| | wt% | wt% | wt% | | | | | | | | | |
| Ex1-32 | 23.5 | 56.5 | 20.0 | 29.38 | 70.63 | 19.158 | X | -24.49 | 0.95 | 0.92 | 5.14 | 1.21 |
| Ex1-33 | 24.0 | 56.0 | 20.0 | 30.00 | 70.00 | 19.336 | X | -24.48 | 0.95 | 0.92 | 5.19 | 1.20 |
| Ex1-34 | 24.5 | 55.5 | 20.0 | 30.63 | 69.38 | 19.515 | X | -24.47 | 0.95 | 0.91 | 5.24 | 1.20 |
| Ex1-35 | 25.0 | 55.0 | 20.0 | 31.25 | 68.75 | 19.693 | X | -24.46 | 0.94 | 0.91 | 5.30 | 1.19 |
| Ex1-36 | 25.5 | 54.5 | 20.0 | 31.88 | 68.13 | 19.871 | X | -24.44 | 0.94 | 0.91 | 5.35 | 1.19 |
| Ex1-37 | 26.0 | 54.0 | 20.0 | 32.50 | 67.50 | 20.050 | X | -24.43 | 0.94 | 0.91 | 5.40 | 1.19 |
| Ex1-38 | 26.5 | 53.5 | 20.0 | 33.13 | 66.88 | 20.228 | X | -24.42 | 0.93 | 0.91 | 5.46 | 1.18 |
| Ex1-39 | 27.0 | 53.0 | 20.0 | 33.75 | 66.25 | 20.407 | X | -24.41 | 0.93 | 0.90 | 5.51 | 1.18 |
| Ex1-40 | 27.5 | 52.5 | 20.0 | 34.38 | 65.63 | 20.585 | X | -24.40 | 0.92 | 0.90 | 5.56 | 1.17 |
| Ex1-41 | 28.0 | 52.0 | 20.0 | 35.00 | 65.00 | 20.763 | X | -24.39 | 0.92 | 0.90 | 5.62 | 1.17 |
| Ex1-42 | 28.5 | 51.5 | 20.0 | 35.63 | 64.38 | 20.942 | X | -24.38 | 0.92 | 0.90 | 5.67 | 1.17 |
| Ex1-43 | 29.0 | 51.0 | 20.0 | 36.25 | 63.75 | 21.120 | X | -24.36 | 0.91 | 0.90 | 5.72 | 1.16 |
| Ex1-44 | 29.5 | 50.5 | 20.0 | 36.88 | 63.13 | 21.299 | X | -24.35 | 0.91 | 0.89 | 5.77 | 1.16 |
| Ex1-45 | 30.0 | 50.0 | 20.0 | 37.50 | 62.50 | 21.477 | X | -24.34 | 0.91 | 0.89 | 5.82 | 1.15 |
| Ex1-46 | 30.5 | 49.5 | 20.0 | 38.13 | 61.88 | 21.655 | X | -24.33 | 0.90 | 0.89 | 5.87 | 1.15 |
| Ex1-47 | 31.0 | 49.0 | 20.0 | 38.75 | 61.25 | 21.834 | X | -24.32 | 0.90 | 0.89 | 5.92 | 1.14 |
| Ex1-48 | 31.5 | 48.5 | 20.0 | 39.38 | 60.63 | 22.012 | X | -24.31 | 0.90 | 0.88 | 5.96 | 1.14 |
| Ex1-49 | 32.0 | 48.0 | 20.0 | 40.00 | 60.00 | 22.191 | X | -24.30 | 0.89 | 0.88 | 6.01 | 1.14 |
| Ex1-50 | 32.5 | 47.5 | 20.0 | 40.63 | 59.38 | 22.369 | X | -24.30 | 0.89 | 0.88 | 6.05 | 1.13 |
| Ex1-51 | 33.0 | 47.0 | 20.0 | 41.25 | 58.75 | 22.547 | X | -24.29 | 0.88 | 0.88 | 6.09 | 1.13 |
| Ex1-52 | 33.5 | 46.5 | 20.0 | 41.88 | 58.13 | 22.726 | X | -24.28 | 0.88 | 0.88 | 6.13 | 1.13 |
| Ex1-53 | 34.0 | 46.0 | 20.0 | 42.50 | 57.50 | 22.904 | X | -24.28 | 0.88 | 0.87 | 6.17 | 1.12 |
| Ex1-54 | 34.5 | 45.5 | 20.0 | 43.13 | 56.88 | 23.083 | X | -24.27 | 0.87 | 0.87 | 6.20 | 1.12 |
| Ex1-55 | 35.0 | 45.0 | 20.0 | 43.75 | 56.25 | 23.261 | X | -24.27 | 0.87 | 0.87 | 6.24 | 1.12 |
| Ex1-56 | 35.5 | 44.5 | 20.0 | 44.38 | 55.63 | 23.440 | X | -24.26 | 0.87 | 0.87 | 6.27 | 1.11 |
| Ex1-57 | 36.0 | 44.0 | 20.0 | 45.00 | 55.00 | 23.618 | X | -24.26 | 0.86 | 0.86 | 6.30 | 1.11 |

In Ex1-1 to Ex1-17, since the working medium contains propane, HFO-1123, and HFO-1234yf and the combustion heat amount is less than 19.000 MJ/kg, it was found that the working medium has excellent performance as a refrigerant.

[Ex2-1 toEx2-10]

In Ex2-1 to Ex2-10, a working medium in which propane, HFO-1123, and HFC-32 were mixed in the composition shown in Table 716. The combustion heat amount (in the table, described as "HOC"), the discharge temperature (in the table, described as "Td"), the condensing pressure (in the table, described as "Pc"), CAP, the temperature glide (in the table, described as "TG"), and the pressure loss (in the table, described as "dP") of the working medium were measured. The measurement methods of the combustion heat amount, the discharge temperature, the condensing pressure, CAP, the temperature glide, and the pressure loss are as described above. The measurement results are shown in Table 716 together with the composition of the working medium. Ex2-1 to Ex2-7 are Examples, and Ex2-8 to Ex2-10 are Comparative Examples.

[Table 716]

| | composition | | | mass ratio | | HOC | | Td | Pc | CAP | TG | dP |
|---|---|---|---|---|---|---|---|---|---|---|---|---|
| | propane | HFO-1123 | HFC-32 | propane | HFO-1123 | MJ/kg | Evaluation | | | | | |
| | wt% | wt% | wt% | | | | | | | | | |
| Ex2-1 | 19.0 | 75.0 | 6.0 | 20.2 | 79.8 | 17.366 | O | -24.18 | 1.20 | 1.08 | 1.00 | 1.13 |
| Ex2-2 | 18.0 | 72.0 | 10.0 | 20 | 80 | 16.965 | O | -23.63 | 1.22 | 1.10 | 0.68 | 1.10 |
| Ex2-3 | 16.0 | 65.0 | 19.0 | 19.75 | 80.25 | 16.152 | O | -22.28 | 1.26 | 1.14 | 0.12 | 1.03 |
| Ex2-4 | 4.0 | 74.1 | 21.9 | 5.1 | 94.9 | 11.517 | O | -20.34 | 1.26 | 1.17 | 0.06 | 1.02 |
| Ex2-5 | 14.9 | 63.6 | 21.5 | 19.0 | 81.0 | 15.732 | O | -21.82 | 1.26 | 1.15 | -0.01 | 1.01 |
| Ex2-6 | 18.3 | 61.6 | 20.1 | 22.9 | 77.1 | 16.960 | O | -22.13 | 1.25 | 1.13 | 0.33 | 1.01 |
| Ex2-7 | 15.0 | 80.0 | 5.0 | 15.8 | 84.2 | 15.950 | O | -24.56 | 1.22 | 1.09 | 0.35 | 1.17 |
| Ex2-8 | 15.0 | 85.0 | 0 | 15 | 85 | 16.005 | O | -25.45 | 1.20 | 1.07 | 0.37 | 1.22 |
| Ex2-9 | 24.5 | 55.5 | 20.0 | 30.6 | 69.4 | 19.174 | X | -21.63 | 1.21 | 1.11 | 1.65 | 0.98 |
| Ex2-10 | 25.0 | 54.0 | 21.0 | 31.6 | 68.4 | 19.341 | X | -21.44 | 1.21 | 1.11 | 1.72 | 0.97 |

In Ex2-1 to Ex2-7, since the working medium contains propane, HFO-1123, and HFC-32 and the combustion heat amount is less than 19.000 MJ/kg, it was found that the working medium has excellent performance as a refrigerant.

[Ex3-1 to Ex3-24]

In Ex3-1 to Ex3-24, a working medium in which propane, HFO-1123, and HFO-1234Ze(E) were mixed in the composition shown in Table 717. The combustion heat amount (in the table, described as "HOC"), the discharge temperature (in the table, described as "Td"), the condensing pressure (in the table, described as "Pc"), the temperature glide (in the table, described as "TG"), CAP, and COP of the working medium were measured. The measurement methods of the combustion heat amount, the discharge temperature, the condensing pressure, the temperature glide, CAP, and COP are as described above. The measurement results are shown in Table 717 together with the composition of the working medium. Ex3-1 to Ex3-22 are Examples, and Ex3-23 to Ex3-24 are Comparative Examples.

In particular, in Ex3-10 to Ex3-14 and Ex3-16 to Ex3-20, the content of HFO-1234Ze(E) is from 11.0% by mass to 25.0% by mass with respect to the total content of propane, HFO-1123, and HFO-1234Ze(E), and the total content is 78.5% by mass or more with respect to the total amount of the working medium, so that a condensing pressure of 1.12 or less and a temperature glide of 7°C or less can be achieved.

In Ex3-1 to Ex3-5 and Ex3-15, the content of propane is 10% by mass or less with respect to the total content of propane and HFO-1123, and the content of HFO-1234Ze(E) is 15.0% by mass or less with respect to the total content of propane, HFO-1123, and HFO-1234Ze(E), so that the combustion heat amount is lower and a temperature glide of 5°C or less can be achieved.

In Ex3-6 to Ex3-9, the content of propane is 20.0% by mass or less with respect to the total content of propane and HFO-1123, and the content of HFO-1234Ze(E) is 9.0% by mass or less with respect to the total content of propane, HFO-1123, and HFO-1234Ze(E), so that the combustion heat amount was lower and a temperature glide of 4°C or less could be achieved.

[Table 717]

| | HFO-1234ze(E) | propane | HFO-1123 | propane/ (propane+HFO-1123) | HOC | Td | Pc | Pe | TG | CAP | COP |
|---|---|---|---|---|---|---|---|---|---|---|---|
| | wt% | wt% | wt% | | MJ/kg | | | | | | |
| Ex3-1 | 15 | 8 | 77 | 9.4 | 13.303 | -23.35 | 1.07 | 1.14 | 4.20 | 1.00 | 0.95 |
| Ex3-2 | 5 | 9 | 86 | 9.5 | 13.701 | -24.69 | 1.17 | 1.27 | 1.33 | 1.06 | 0.92 |
| Ex3-3 | 15 | 4 | 81 | 4.7 | 11.632 | -23.01 | 1.08 | 1.14 | 4.24 | 1.00 | 0.95 |
| Ex3-4 | 5 | 4 | 91 | 4.2 | 11.611 | -24.29 | 1.18 | 1.27 | 1.32 | 1.07 | 0.93 |
| Ex3-5 | 10 | 4 | 86 | 4.4 | 11.621 | -23.64 | 1.13 | 1.20 | 2.77 | 1.04 | 0.94 |
| Ex3-6 | 9 | 18 | 73 | 19.8 | 17.076 | -24.39 | 1.09 | 1.18 | 3.05 | 1.00 | 0.94 |
| Ex3-7 | 9 | 4 | 87 | 4.4 | 11.619 | -23.77 | 1.14 | 1.21 | 2.48 | 1.04 | 0.94 |
| Ex3-8 | 5 | 19 | 76 | 20.0 | 17.432 | -24.72 | 1.12 | 1.22 | 2.25 | 1.02 | 0.94 |
| Ex3-9 | 9 | 13 | 78 | 14.3 | 15.292 | -24.38 | 1.12 | 1.20 | 2.59 | 1.02 | 0.94 |
| Ex3-10 | 24 | 4 | 72 | 5.3 | 11.651 | -22.00 | 0.81 | 1.02 | 6.85 | 0.94 | 0.97 |
| Ex3-11 | 24 | 19 | 57 | 25.0 | 17.434 | -23.31 | 0.77 | 1.00 | 6.42 | 0.91 | 0.98 |
| Ex3-12 | 11 | 4 | 85 | 4.5 | 11.623 | -23.52 | 1.12 | 1.19 | 3.06 | 1.03 | 0.94 |
| Ex3-13 | 20 | 4 | 76 | 5.0 | 11.642 | -22.42 | 1.03 | 1.07 | 5.70 | 0.97 | 0.96 |
| Ex3-14 | 20 | 6 | 74 | 7.5 | 12.478 | -22.60 | 1.03 | 1.08 | 5.67 | 0.97 | 0.96 |
| Ex3-15 | 15 | 6 | 79 | 7.1 | 12.468 | -23.18 | 1.08 | 1.14 | 4.22 | 1.00 | 0.95 |
| Ex3-16 | 11 | 7 | 82 | 7.9 | 12.877 | -23.77 | 1.12 | 1.19 | 3.04 | 1.02 | 0.94 |
| Ex3-17 | 11 | 22 | 67 | 24.7 | 18.503 | -24.08 | 1.04 | 1.12 | 4.08 | 0.98 | 0.96 |
| Ex3-18 | 24 | 6 | 70 | 7.9 | 12.486 | -22.17 | 0.81 | 1.03 | 6.81 | 0.94 | 0.97 |
| Ex3-19 | 24 | 11 | 65 | 14.5 | 14.576 | -22.66 | 0.80 | 1.02 | 6.60 | 0.93 | 0.97 |
| Ex3-20 | 20 | 12 | 68 | 15.0 | 14.936 | -23.12 | 1.01 | 1.07 | 5.53 | 0.95 | 0.96 |
| Ex3-21 | 30 | 5 | 65 | 7.1 | 12.081 | -21.55 | 0.93 | 0.95 | 8.45 | 0.90 | 0.99 |
| Ex3-22 | 30 | 3 | 67 | 4.3 | 11.245 | -21.38 | 0.92 | 0.95 | 8.49 | 0.90 | 0.99 |
| Ex3-23 | 10 | 24 | 66 | 26.7 | 19.217 | -24.30 | 1.04 | 1.12 | 4.23 | 0.97 | 0.96 |
| Ex3-24 | 24 | 24 | 52 | 31.6 | 19.218 | -23.56 | 0.75 | 0.97 | 6.50 | 0.89 | 1.00 |

In Ex3-1 to Ex3-22, since the working medium contains propane, HFO-1123, and HFO-1234Ze(E) and the combustion heat amount is less than 19.000 MJ/kg, it was found that the working medium has excellent performance as a refrigerant.

[Ex4-1 to Ex4-37]

In Ex4-1 to Ex4-37, a working medium in which propane, HFO-1123, and $CO_2$ were mixed in the composition shown in Table 718. The combustion heat amount (in the table, described as "HOC"), the discharge temperature (in the table, described as "Td"), the condensing pressure (in the table, described as "Pc"), the temperature glide (in the table, described as "TG"), CAP, and COP of the working medium were measured. The measurement methods of the combustion heat amount, the discharge temperature, the condensing pressure, the temperature glide, CAP, and COP are as described above. The measurement results are shown in Table 718 together with the composition of the working medium. Ex4-1 to Ex4-35 are Examples, and Ex4-36 to Ex4-37 are Comparative Examples.

[Table 718]

| | CO$_2$ | propane | HFO-1123 | HOC | Td | Pc | Pe | TG | CAP | COP |
|---|---|---|---|---|---|---|---|---|---|---|
| | wt% | wt% | wt% | MJ/kg | | | | | | |
| Ex4-1 | 30 | 4 | 66 | 8.622 | -13.83 | 1.90 | 2.13 | 4.76 | 1.65 | 0.87 |
| Ex4-2 | 30 | 5 | 65 | 9.040 | -13.97 | 1.89 | 2.13 | 4.77 | 1.64 | 0.87 |
| Ex4-3 | 30 | 7 | 63 | 9.876 | -14.19 | 1.88 | 2.12 | 4.85 | 1.63 | 0.87 |
| Ex4-4 | 25 | 5 | 70 | 9.536 | -15.50 | 1.78 | 2.00 | 4.38 | 1.56 | 0.88 |
| Ex4-5 | 25 | 8 | 67 | 10.790 | -15.80 | 1.77 | 1.99 | 4.51 | 1.55 | 0.88 |
| Ex4-6 | 25 | 11 | 64 | 11.915 | -15.90 | 1.75 | 1.97 | 4.85 | 1.53 | 0.89 |
| Ex4-7 | 20 | 4 | 76 | 9.615 | -17.02 | 1.67 | 1.87 | 3.84 | 1.49 | 0.90 |
| Ex4-8 | 20 | 7 | 73 | 10.868 | -17.36 | 1.66 | 1.86 | 3.88 | 1.47 | 0.90 |
| Ex4-9 | 20 | 10 | 70 | 12.090 | -17.54 | 1.65 | 1.85 | 4.10 | 1.46 | 0.90 |
| Ex4-10 | 20 | 15 | 65 | 13.874 | -17.40 | 1.61 | 1.81 | 4.96 | 1.44 | 0.91 |
| Ex4-11 | 15 | 5 | 80 | 10.529 | -18.91 | 1.56 | 1.73 | 3.12 | 1.40 | 0.91 |
| Ex4-12 | 15 | 8 | 77 | 11.783 | -19.20 | 1.55 | 1.73 | 3.19 | 1.38 | 0.91 |
| Ex4-13 | 15 | 11 | 74 | 12.980 | -19.34 | 1.53 | 1.72 | 3.41 | 1.37 | 0.91 |
| Ex4-14 | 15 | 18 | 67 | 15.477 | -18.93 | 1.47 | 1.65 | 4.78 | 1.34 | 0.92 |
| Ex4-15 | 10 | 5 | 85 | 11.026 | -20.77 | 1.45 | 1.60 | 2.20 | 1.30 | 0.92 |
| Ex4-16 | 10 | 7 | 83 | 11.861 | -20.99 | 1.44 | 1.60 | 2.23 | 1.30 | 0.92 |
| Ex4-17 | 10 | 10 | 80 | 13.115 | -21.20 | 1.43 | 1.59 | 2.35 | 1.28 | 0.92 |
| Ex4-18 | 10 | 15 | 75 | 14.940 | -21.19 | 1.40 | 1.56 | 2.95 | 1.26 | 0.92 |
| Ex4-19 | 10 | 22 | 68 | 17.437 | -20.38 | 1.34 | 1.49 | 4.74 | 1.23 | 0.94 |
| Ex4-20 | 8 | 5 | 87 | 11.224 | -21.60 | 1.40 | 1.55 | 1.82 | 1.26 | 0.92 |
| Ex4-21 | 8 | 7 | 85 | 12.060 | -21.80 | 1.40 | 1.55 | 1.82 | 1.26 | 0.92 |
| Ex4-22 | 8 | 10 | 82 | 13.314 | -22.00 | 1.39 | 1.54 | 1.91 | 1.25 | 0.92 |
| Ex4-23 | 8 | 15 | 77 | 15.153 | -22.00 | 1.36 | 1.51 | 2.47 | 1.23 | 0.92 |
| Ex4-24 | 8 | 24 | 68 | 18.364 | -20.91 | 1.28 | 1.42 | 4.82 | 1.18 | 0.94 |
| Ex4-25 | 6 | 4 | 90 | 11.005 | -22.31 | 1.36 | 1.49 | 1.39 | 1.23 | 0.92 |
| Ex4-26 | 6 | 6 | 88 | 11.841 | -22.51 | 1.36 | 1.50 | 1.37 | 1.22 | 0.92 |
| Ex4-27 | 6 | 10 | 84 | 13.512 | -22.82 | 1.34 | 1.49 | 1.45 | 1.21 | 0.92 |
| Ex4-28 | 6 | 24 | 70 | 18.577 | -21.81 | 1.24 | 1.37 | 4.20 | 1.14 | 0.94 |
| Ex4-29 | 4 | 4 | 92 | 11.203 | -23.14 | 1.32 | 1.44 | 0.93 | 1.19 | 0.92 |
| Ex4-30 | 4 | 6 | 90 | 12.039 | -23.37 | 1.31 | 1.44 | 0.91 | 1.18 | 0.92 |
| Ex4-31 | 4 | 10 | 86 | 13.711 | -23.66 | 1.30 | 1.44 | 0.97 | 1.17 | 0.92 |
| Ex4-32 | 4 | 23 | 73 | 18.433 | -22.88 | 1.21 | 1.33 | 3.28 | 1.11 | 0.94 |
| Ex4-33 | 40 | 5 | 55 | 8.047 | -11.20 | 2.12 | 2.40 | 5.15 | 1.78 | 0.83 |
| Ex4-34 | 40 | 12 | 48 | 10.673 | -11.47 | 2.07 | 2.34 | 6.07 | 1.73 | 0.83 |
| Ex4-35 | 10 | 35 | 55 | 10.673 | -18.17 | 1.20 | 1.33 | 9.28 | 1.16 | 0.99 |
| Ex4-36 | 4 | 25 | 71 | 19.147 | -22.56 | 1.19 | 1.31 | 3.89 | 1.10 | 0.94 |
| Ex4-37 | 8 | 26 | 66 | 19.078 | -20.57 | 1.26 | 1.39 | 5.49 | 1.17 | 0.95 |

In Ex4-1 to Ex4-35, since the working medium contains propane, HFO-1123, and $CO_2$ and the combustion heat amount is less than 19.000 MJ/kg, it was found that the working medium has excellent performance as a refrigerant.
In Ex4-1 to Ex4-34, in a case in which the content of HFO-1123 with respect to the total content of propane,

HFO-1123, and $CO_2$ is designated as $X_1$% by mass, and the content of $CO_2$ with respect to the total content is designated as $Y_1$% by mass, the $X_1$ and the $Y_1$ satisfy Formula (1), and the total content is 78.5% by mass or more with respect to the total amount of the working medium, so that a temperature glide of 7°C or less could be achieved.

[Ex5-1 to Ex5-19]

In Ex5-1 to Ex5-17, a working medium in which propane, HFO-1123, and $CF_3I$ were mixed in the composition shown in Table 718. The combustion heat amount (in the table, described as "HOC"), the discharge temperature (in the table, described as "Td"), the condensing pressure (in the table, described as "Pc"), the temperature glide (in the table, described as "TG"), CAP, COP, and the pressure loss (in the table, described as "dP") of the working medium were measured. The measurement methods of the combustion heat amount, the discharge temperature, the condensing pressure, the temperature glide, CAP, COP, and dP are as described above. The measurement results are shown in Table 719 together with the composition of the working medium. Ex5-1 to Ex5-17 are Examples, and Ex5-18 to Ex5-19 are Comparative Examples.

[Table 719]

|  | $CF_3I$ | propane | HFO-1123 | HOC | Td | Pc | Pe | TG | CAP | COP | dP |
|---|---|---|---|---|---|---|---|---|---|---|---|
|  | wt% | wt% | wt% | MJ/kg |  |  |  |  |  |  |  |
| Ex5-1 | 30 | 4 | 66 | 8.885 | -22.16 | 1.08 | 1.15 | 3.70 | 1.00 | 0.94 | 1.54 |
| Ex5-2 | 30 | 8 | 62 | 10.556 | -21.70 | 1.05 | 1.13 | 4.87 | 0.98 | 0.95 | 1.49 |
| Ex5-3 | 20 | 4 | 76 | 9.790 | -23.69 | 1.14 | 1.23 | 1.67 | 1.05 | 0.93 | 1.45 |
| Ex5-4 | 20 | 10 | 70 | 12.297 | -23.34 | 1.11 | 1.20 | 2.85 | 1.02 | 0.94 | 1.39 |
| Ex5-5 | 20 | 15 | 65 | 14.141 | -22.72 | 1.07 | 1.16 | 4.27 | 0.99 | 0.95 | 1.34 |
| Ex5-6 | 25 | 8 | 67 | 11.009 | -22.69 | 1.09 | 1.17 | 3.52 | 1.01 | 0.94 | 1.45 |
| Ex5-7 | 13 | 4 | 83 | 10.424 | -24.33 | 1.18 | 0.92 | 0.79 | 1.07 | 0.93 | 1.39 |
| Ex5-8 | 15 | 10 | 75 | 12.750 | -24.08 | 1.14 | 1.24 | 1.84 | 1.04 | 0.93 | 1.36 |
| Ex5-9 | 15 | 20 | 65 | 16.391 | -22.88 | 1.06 | 1.15 | 4.53 | 0.99 | 0.95 | 1.24 |
| Ex5-10 | 10 | 4 | 86 | 10.695 | -24.53 | 1.19 | 1.29 | 0.52 | 1.08 | 0.93 | 1.36 |
| Ex5-11 | 10 | 10 | 80 | 13.203 | -24.65 | 1.17 | 1.27 | 1.03 | 1.06 | 0.93 | 1.32 |
| Ex5-12 | 10 | 18 | 72 | 16.143 | -23.97 | 1.12 | 1.21 | 2.75 | 1.02 | 0.94 | 1.24 |
| Ex5-13 | 10 | 25 | 65 | 18.641 | -22.98 | 1.05 | 1.14 | 4.83 | 0.98 | 0.95 | 1.17 |
| Ex5-14 | 5 | 24 | 71 | 18.750 | -23.87 | 1.09 | 1.19 | 3.39 | 1.01 | 0.94 | 1.16 |
| Ex5-15 | 25 | 12 | 63 | 12.604 | -22.19 | 1.06 | 1.14 | 4.69 | 0.99 | 0.95 | 1.41 |
| Ex5-16 | 40 | 5 | 55 | 8.397 | -19.76 | 0.99 | 1.05 | 7.12 | 0.95 | 0.96 | 1.63 |
| Ex5-17 | 35 | 8 | 57 | 10.104 | -20.59 | 1.01 | 1.08 | 6.42 | 0.96 | 0.96 | 1.54 |
| Ex5-18 | 5 | 25 | 70 | 19.107 | -23.72 | 1.09 | 1.18 | 3.69 | 1.00 | 0.94 | 1.15 |
| Ex5-19 | 10 | 27 | 63 | 19.355 | -22.72 | 1.03 | 1.12 | 5.41 | 0.97 | 0.96 | 1.15 |

In Ex5-1 to Ex5-17, since the working medium contains propane, HFO-1123, and $CF_3I$ and the combustion heat amount is less than 19.000 MJ/kg, it was found that the working medium has excellent performance as a refrigerant.
In Ex5-1 to Ex5-15, in a case in which the content of propane with respect to the total content of propane, HFO-1123, and $CF_3I$ is designated as $X_2$% by mass, and the content of $CF_3I$ with respect to the total content is designated as $Y_2$% by mass, the $X_2$ and the $Y_2$ satisfy Formula (2A), and the total content is 78.5% by mass or more with respect to the total amount of the working medium, so that a temperature glide of 5°C or less could be achieved.

[Ex6-1 to Ex6-84]

In Ex6-1 to Ex6-84, a working medium in which propane, HFO-1123, HFC-32, and HFO-1234yf were mixed in the compositions shown in Tables 720 and 723. The combustion heat amount (in the table, described as "HOC"), the discharge temperature (in the table, described as "Td"), the condensing pressure (in the table, described as "Pc"), the evaporating pressure (in the table, described as "Pe"), the temperature glide (in the table, described as "TG"), CAP, COP, and the compression ratio (in the table, described as "Pc/Pe") of the working medium were measured. The measurement methods of the combustion heat amount, the discharge temperature, the condensing pressure, the evaporating pressure, the temperature glide, CAP, COP, and the compression ratio are as described above. In the table, the unit of the discharge temperature and the temperature glide is "°C". The measurement results are shown in Tables 720 to 723 together with the composition of the working medium.

[Table 720]

| | HFC-32 wt% | HFO-1123 wt% | propane wt% | HFO-1234yf wt% | HOC MJ/kg | Td | Pc | Pe | TG | CAP | COP | Pc/Pe |
|---|---|---|---|---|---|---|---|---|---|---|---|---|
| Ex6-1 | 19 | 25 | 21 | 35 | 18.146 | -21.03 | 0.944 | 1.001 | 6.788 | 0.933 | 1.000 | 0.943 |
| Ex6-2 | 19 | 30 | 21 | 30 | 18.116 | -20.87 | 0.983 | 1.046 | 6.336 | 0.961 | 0.988 | 0.940 |
| Ex6-3 | 19 | 40 | 21 | 20 | 18.056 | -20.80 | 1.067 | 1.143 | 5.093 | 1.017 | 0.965 | 0.934 |
| Ex6-4 | 19 | 50 | 21 | 10 | 17.996 | -21.10 | 1.155 | 1.248 | 3.403 | 1.072 | 0.941 | 0.925 |
| Ex6-5 | 19 | 55 | 21 | 5 | 17.966 | -21.41 | 1.200 | 1.303 | 2.389 | 1.101 | 0.929 | 0.921 |
| Ex6-6 | 19 | 40 | 16 | 25 | 16.302 | -20.65 | 1.049 | 1.115 | 5.362 | 1.005 | 0.969 | 0.940 |
| Ex6-7 | 19 | 45 | 16 | 20 | 16.272 | -20.72 | 1.092 | 1.167 | 4.587 | 1.034 | 0.957 | 0.936 |
| Ex6-8 | 19 | 50 | 16 | 15 | 16.242 | -20.89 | 1.137 | 1.220 | 3.699 | 1.063 | 0.946 | 0.932 |
| Ex6-9 | 19 | 55 | 16 | 10 | 16.212 | -21.17 | 1.183 | 1.276 | 2.700 | 1.093 | 0.935 | 0.927 |
| Ex6-10 | 19 | 50 | 11 | 20 | 14.488 | -20.41 | 1.109 | 1.179 | 4.358 | 1.048 | 0.954 | 0.941 |
| Ex6-11 | 19 | 55 | 11 | 15 | 14.458 | -20.60 | 1.155 | 1.234 | 3.428 | 1.079 | 0.943 | 0.936 |
| Ex6-12 | 19 | 60 | 11 | 10 | 14.428 | -20.91 | 1.202 | 1.292 | 2.390 | 1.109 | 0.933 | 0.931 |
| Ex6-13 | 19 | 60 | 6 | 15 | 12.484 | -20.13 | 1.161 | 1.233 | 3.358 | 1.090 | 0.946 | 0.941 |
| Ex6-14 | 19 | 65 | 6 | 10 | 12.444 | -20.41 | 1.208 | 1.291 | 2.327 | 1.121 | 0.935 | 0.936 |
| Ex6-15 | 19 | 65 | 4 | 12 | 11.624 | -20.06 | 1.187 | 1.262 | 2.733 | 1.111 | 0.942 | 0.941 |
| Ex6-16 | 19 | 67 | 3 | 11 | 11.198 | -20.00 | 1.195 | 1.270 | 2.509 | 1.119 | 0.942 | 0.941 |
| Ex6-17 | 19 | 20 | 23 | 38 | 18.877 | -21.25 | 0.910 | 0.965 | 7.094 | 0.910 | 1.012 | 0.943 |
| Ex6-18 | 19 | 55 | 23 | 3 | 18.667 | -21.37 | 1.204 | 1.311 | 2.422 | 1.102 | 0.928 | 0.919 |
| Ex6-19 | 19 | 60 | 19 | 2 | 17.234 | -21.80 | 1.242 | 1.354 | 1.319 | 1.128 | 0.921 | 0.917 |
| Ex6-20 | 19 | 30 | 15 | 36 | 16.011 | -20.74 | 0.960 | 1.012 | 6.652 | 0.945 | 0.994 | 0.949 |
| Ex6-21 | 19 | 70 | 5 | 6 | 11.994 | -20.60 | 1.247 | 1.337 | 1.425 | 1.149 | 0.929 | 0.932 |

[Table 721]

| | HFC-32 wt% | HFO-1123 wt% | propane wt% | HFO-1234yf wt% | HOC MJ/kg | Td | Pc | Pe | TG | CAP | COP | Pc/Pe |
|---|---|---|---|---|---|---|---|---|---|---|---|---|
| Ex6-22 | 20 | 25 | 20 | 35 | 17.778 | -20.83 | 0.952 | 1.008 | 6.679 | 0.939 | 0.998 | 0.944 |
| Ex6-23 | 20 | 30 | 20 | 30 | 17.748 | -20.69 | 0.992 | 1.054 | 6.201 | 0.967 | 0.986 | 0.941 |
| Ex6-24 | 20 | 40 | 20 | 20 | 17.688 | -20.65 | 1.075 | 1.151 | 4.909 | 1.023 | 0.962 | 0.934 |
| Ex6-25 | 20 | 50 | 20 | 10 | 17.628 | -21.00 | 1.164 | 1.257 | 3.172 | 1.080 | 0.939 | 0.926 |
| Ex6-26 | 20 | 54 | 20 | 6 | 17.604 | -21.26 | 1.200 | 1.302 | 2.352 | 1.103 | 0.930 | 0.922 |
| Ex6-27 | 20 | 40 | 15 | 25 | 15.934 | -20.43 | 1.055 | 1.122 | 5.251 | 1.011 | 0.967 | 0.941 |
| Ex6-28 | 20 | 45 | 15 | 20 | 15.904 | -20.51 | 1.099 | 1.173 | 4.466 | 1.040 | 0.956 | 0.937 |
| Ex6-29 | 20 | 50 | 15 | 15 | 15.874 | -20.70 | 1.144 | 1.227 | 3.570 | 1.069 | 0.945 | 0.933 |
| Ex6-30 | 20 | 55 | 15 | 10 | 15.844 | -20.99 | 1.190 | 1.283 | 2.564 | 1.099 | 0.934 | 0.927 |
| Ex6-31 | 20 | 50 | 10 | 20 | 14.120 | -20.15 | 1.113 | 1.182 | 4.288 | 1.054 | 0.954 | 0.942 |
| Ex6-32 | 20 | 55 | 10 | 15 | 14.090 | -20.35 | 1.159 | 1.237 | 3.364 | 1.084 | 0.943 | 0.937 |
| Ex6-33 | 20 | 60 | 10 | 10 | 14.060 | -20.65 | 1.206 | 1.295 | 2.333 | 1.115 | 0.933 | 0.931 |
| Ex6-34 | 20 | 60 | 5 | 15 | 12.063 | -19.83 | 1.162 | 1.232 | 3.310 | 1.094 | 0.947 | 0.943 |
| Ex6-35 | 20 | 65 | 5 | 10 | 12.022 | -20.11 | 1.209 | 1.290 | 2.295 | 1.126 | 0.937 | 0.937 |
| Ex6-36 | 20 | 65 | 4 | 11 | 11.613 | -19.92 | 1.198 | 1.275 | 2.497 | 1.121 | 0.941 | 0.940 |
| Ex6-37 | 20 | 65 | 3 | 12 | 11.203 | -19.75 | 1.187 | 1.259 | 2.684 | 1.115 | 0.944 | 0.943 |
| Ex6-38 | 20 | 20 | 23 | 37 | 18.860 | -21.04 | 0.921 | 0.977 | 6.989 | 0.919 | 1.008 | 0.943 |
| Ex6-39 | 20 | 53 | 23 | 4 | 18.662 | -21.17 | 1.198 | 1.302 | 2.567 | 1.100 | 0.930 | 0.920 |
| Ex6-40 | 20 | 60 | 19 | 1 | 17.217 | -21.76 | 1.254 | 1.369 | 1.030 | 1.137 | 0.919 | 0.916 |
| Ex6-41 | 20 | 30 | 15 | 35 | 15.994 | -20.55 | 0.971 | 1.024 | 6.491 | 0.953 | 0.991 | 0.948 |
| Ex6-42 | 20 | 70 | 5 | 5 | 11.982 | -20.50 | 1.258 | 1.351 | 1.175 | 1.159 | 0.928 | 0.931 |

[Table 722]

| | HFC-32 wt% | HFO-1123 wt% | propane wt% | HFO-1234yf wt% | HOC MJ/kg | Td | Pc | Pe | TG | CAP | COP | Pc/Pe |
|---|---|---|---|---|---|---|---|---|---|---|---|---|
| Ex6-43 | 21 | 28 | 19 | 32 | 17.392 | -20.54 | 0.983 | 1.042 | 6.280 | 0.962 | 0.988 | 0.943 |
| Ex6-44 | 21 | 35 | 19 | 25 | 17.350 | -20.45 | 1.041 | 1.109 | 5.455 | 1.001 | 0.972 | 0.939 |
| Ex6-45 | 21 | 40 | 19 | 20 | 17.320 | -20.49 | 1.084 | 1.158 | 4.733 | 1.030 | 0.960 | 0.935 |
| Ex6-46 | 21 | 50 | 19 | 10 | 17.260 | -20.88 | 1.172 | 1.266 | 2.959 | 1.087 | 0.938 | 0.926 |
| Ex6-47 | 21 | 53 | 19 | 7 | 17.242 | -21.08 | 1.200 | 1.300 | 2.340 | 1.104 | 0.931 | 0.923 |
| Ex6-48 | 21 | 37 | 15 | 27 | 15.935 | -20.27 | 1.041 | 1.104 | 5.473 | 1.002 | 0.972 | 0.943 |
| Ex6-49 | 21 | 40 | 15 | 24 | 15.917 | -20.28 | 1.067 | 1.133 | 5.043 | 1.020 | 0.965 | 0.941 |
| Ex6-50 | 21 | 50 | 15 | 14 | 15.857 | -20.59 | 1.155 | 1.239 | 3.327 | 1.078 | 0.943 | 0.932 |
| Ex6-51 | 21 | 55 | 15 | 9 | 15.827 | -20.90 | 1.202 | 1.297 | 2.306 | 1.108 | 0.932 | 0.927 |
| Ex6-52 | 21 | 50 | 10 | 19 | 14.103 | -20.01 | 1.124 | 1.195 | 4.063 | 1.062 | 0.952 | 0.941 |
| Ex6-53 | 21 | 55 | 10 | 14 | 14.073 | -20.23 | 1.170 | 1.250 | 3.126 | 1.093 | 0.942 | 0.936 |
| Ex6-54 | 21 | 59 | 10 | 10 | 14.049 | -20.48 | 1.208 | 1.296 | 2.300 | 1.118 | 0.933 | 0.932 |
| Ex6-55 | 21 | 60 | 5 | 14 | 12.051 | -19.69 | 1.172 | 1.244 | 3.080 | 1.103 | 0.946 | 0.942 |
| Ex6-56 | 21 | 63 | 5 | 11 | 12.027 | -19.85 | 1.201 | 1.279 | 2.478 | 1.122 | 0.940 | 0.939 |
| Ex6-57 | 21 | 62 | 4 | 13 | 11.625 | -19.62 | 1.180 | 1.253 | 2.871 | 1.111 | 0.945 | 0.942 |
| Ex6-58 | 21 | 65 | 3 | 11 | 11.191 | -19.61 | 1.197 | 1.272 | 2.452 | 1.124 | 0.943 | 0.941 |
| Ex6-59 | 21 | 20 | 23 | 36 | 18.843 | -20.83 | 0.932 | 0.989 | 6.870 | 0.927 | 1.005 | 0.943 |
| Ex6-60 | 21 | 52 | 23 | 4 | 18.651 | -21.05 | 1.201 | 1.304 | 2.500 | 1.103 | 0.929 | 0.921 |
| Ex6-61 | 21 | 57 | 15 | 7 | 15.815 | -21.06 | 1.221 | 1.320 | 1.867 | 1.120 | 0.928 | 0.925 |
| Ex6-62 | 21 | 30 | 15 | 34 | 15.977 | -20.36 | 0.982 | 1.036 | 6.322 | 0.961 | 0.988 | 0.948 |
| Ex6-63 | 21 | 65 | 5 | 9 | 12.011 | -19.98 | 1.220 | 1.302 | 2.056 | 1.135 | 0.936 | 0.937 |

[Table 723]

| | HFC-32 wt% | HFO-1123 wt% | propane wt% | HFO-1234yf wt% | HOC MJ/kg | Td | Pc | Pe | TG | CAP | COP | Pc/Pe |
|---|---|---|---|---|---|---|---|---|---|---|---|---|
| Ex6-64 | 22 | 25 | 20 | 33 | 17.744 | -20.46 | 0.973 | 1.031 | 6.371 | 0.955 | 0.991 | 0.944 |
| Ex6-65 | 22 | 30 | 20 | 28 | 17.714 | -20.35 | 1.014 | 1.077 | 5.845 | 0.984 | 0.980 | 0.941 |
| Ex6-66 | 22 | 40 | 20 | 18 | 17.654 | -20.40 | 1.098 | 1.176 | 4.466 | 1.040 | 0.957 | 0.934 |
| Ex6-67 | 22 | 45 | 20 | 13 | 17.624 | -20.57 | 1.142 | 1.229 | 3.612 | 1.068 | 0.945 | 0.929 |
| Ex6-68 | 22 | 52 | 20 | 6 | 17.582 | -20.98 | 1.205 | 1.308 | 2.234 | 1.109 | 0.930 | 0.922 |
| Ex6-69 | 22 | 37 | 15 | 26 | 15.918 | -20.11 | 1.052 | 1.115 | 5.269 | 1.010 | 0.969 | 0.943 |
| Ex6-70 | 22 | 40 | 15 | 23 | 15.900 | -20.14 | 1.077 | 1.146 | 4.829 | 1.028 | 0.963 | 0.940 |
| Ex6-71 | 22 | 45 | 15 | 18 | 15.870 | -20.26 | 1.121 | 1.198 | 4.009 | 1.057 | 0.951 | 0.936 |
| Ex6-72 | 22 | 50 | 15 | 13 | 15.840 | -20.48 | 1.167 | 1.253 | 3.081 | 1.087 | 0.941 | 0.931 |
| Ex6-73 | 22 | 54 | 15 | 9 | 15.816 | -20.75 | 1.204 | 1.298 | 2.262 | 1.111 | 0.932 | 0.927 |
| Ex6-74 | 22 | 48 | 10 | 20 | 14.098 | -19.81 | 1.12 | 1.186 | 4.187 | 1.059 | 0.955 | 0.942 |
| Ex6-75 | 22 | 55 | 10 | 13 | 14.056 | -20.10 | 1.181 | 1.262 | 2.888 | 1.102 | 0.940 | 0.936 |
| Ex6-76 | 22 | 55 | 7 | 16 | 12.899 | -19.64 | 1.156 | 1.228 | 3.441 | 1.090 | 0.948 | 0.942 |
| Ex6-77 | 22 | 60 | 7 | 11 | 12.859 | -19.90 | 1.203 | 1.284 | 2.458 | 1.121 | 0.938 | 0.937 |
| Ex6-78 | 22 | 60 | 5 | 13 | 12.039 | -19.55 | 1.183 | 1.256 | 2.851 | 1.112 | 0.944 | 0.942 |
| Ex6-79 | 22 | 62 | 5 | 11 | 12.023 | -19.66 | 1.202 | 1.279 | 2.451 | 1.125 | 0.940 | 0.940 |
| Ex6-80 | 22 | 20 | 23 | 35 | 18.826 | -20.64 | 0.943 | 1.000 | 6.738 | 0.935 | 1.001 | 0.943 |
| Ex6-81 | 22 | 51 | 24 | 3 | 18.991 | -20.88 | 1.205 | 1.311 | 2.473 | 1.106 | 0.928 | 0.920 |
| Ex6-82 | 22 | 57 | 15 | 6 | 15.798 | -20.99 | 1.232 | 1.334 | 1.601 | 1.129 | 0.926 | 0.924 |
| Ex6-83 | 22 | 30 | 15 | 33 | 15.960 | -20.18 | 0.993 | 1.047 | 6.145 | 0.970 | 0.985 | 0.948 |
| Ex6-84 | 22 | 65 | 5 | 8 | 11.999 | -19.86 | 1.231 | 1.315 | 1.819 | 1.144 | 0.935 | 0.936 |

In Ex6-1 to Ex6-84, since the working medium contains propane, HFO-1123, HFC-32, and HFO-1234yf and the combustion heat amount is less than 19.000 MJ/kg, it was found that the working medium has excellent performance as a refrigerant.

In particular, in Ex6-1 to Ex6-18, Ex6-22 to Ex6-39, Ex6-43 to Ex6-60, and Ex6-64 to Ex6-81, in a case in which a content of HFC-32 with respect to a total content of propane, HFO-1123, HFO-1234yf, and HFC-32 is designated as A% by mass, a content of HFO-1234yf with respect to the total content is designated as B% by mass, a content of propane with respect to the total content is designated as C% by mass, and a content of HFO-1123 with respect to the total content is designated as D% by mass, A, B, C, and D satisfy Formulas (3A) to (3D), so that a condensing pressure of less than 1.2122 could be realized, and a compression ratio of less than 0.9453 could be realized.

[Ex7-1 to Ex7-76]

In Ex7-1 to Ex7-76, a working medium in which propane, HFO-1123, HFC-32, and HFO-1234ze(E) were mixed in the compositions shown in Tables 724 and 727. The combustion heat amount (in the table, described as "HOC"), the discharge temperature (in the table, described as "Td"), the condensing pressure (in the table, described as "Pc"), the evaporating pressure (in the table, described as "Pe"), the temperature glide (in the table, described as "TG"), CAP, COP, and the compression ratio (in the table, described as "Pc/Pe") of the working medium were measured. The measurement methods of the combustion heat amount, the discharge temperature, the condensing pressure, the evaporating pressure, the temperature glide, CAP, COP, and the compression ratio are as described above. In the table, the unit of the discharge temperature and the temperature glide is "°C". The measurement results are shown in Tables 724 to 727 together with the composition of the working medium.

[Table 724]

|  | HFC-32 | HFO-1123 | propane | HFO-1234ze(E) | HOC | Td | Pc | Pe | TG | CAP | COP | Pc/Pe |
|---|---|---|---|---|---|---|---|---|---|---|---|---|
|  | wt% | wt% | wt% | wt% | MJ/kg |  |  |  |  |  |  |  |
| Ex7-1 | 19 | 33 | 20 | 28 | 17.581 | -18.95 | 0.977 | 1.026 | 8.062 | 0.960 | 0.989 | 0.952 |
| Ex7-2 | 19 | 40 | 20 | 21 | 17.580 | -19.46 | 1.044 | 1.106 | 6.524 | 1.005 | 0.970 | 0.944 |
| Ex7-3 | 19 | 50 | 20 | 11 | 17.580 | -20.50 | 1.142 | 1.228 | 4.012 | 1.067 | 0.944 | 0.931 |
| Ex7-4 | 19 | 54 | 20 | 7 | 17.579 | -20.99 | 1.183 | 1.279 | 2.940 | 1.092 | 0.934 | 0.925 |
| Ex7-5 | 19 | 42 | 15 | 24 | 15.796 | -18.68 | 1.034 | 1.085 | 7.286 | 0.999 | 0.971 | 0.954 |
| Ex7-6 | 19 | 50 | 15 | 16 | 15.796 | -19.60 | 1.116 | 1.185 | 5.080 | 1.052 | 0.950 | 0.942 |
| Ex7-7 | 19 | 56 | 15 | 10 | 15.796 | -20.46 | 1.178 | 1.263 | 3.294 | 1.092 | 0.935 | 0.933 |
| Ex7-8 | 19 | 51 | 10 | 20 | 14.012 | -18.50 | 1.086 | 1.138 | 6.337 | 1.037 | 0.958 | 0.954 |
| Ex7-9 | 19 | 55 | 10 | 16 | 14.012 | -19.06 | 1.129 | 1.191 | 5.109 | 1.064 | 0.948 | 0.948 |
| Ex7-10 | 19 | 60 | 10 | 11 | 14.012 | -19.85 | 1.183 | 1.259 | 3.513 | 1.099 | 0.936 | 0.939 |
| Ex7-11 | 19 | 61 | 5 | 15 | 11.977 | -18.57 | 1.141 | 1.197 | 4.880 | 1.080 | 0.949 | 0.953 |
| Ex7-12 | 19 | 65 | 5 | 11 | 11.969 | -19.23 | 1.185 | 1.253 | 3.566 | 1.109 | 0.940 | 0.946 |
| Ex7-13 | 19 | 65 | 3 | 13 | 11.137 | -18.64 | 1.159 | 1.217 | 4.223 | 1.096 | 0.948 | 0.952 |
| Ex7-14 | 19 | 67 | 3 | 11 | 11.133 | -18.97 | 1.181 | 1.246 | 3.564 | 1.111 | 0.943 | 0.948 |
| Ex7-15 | 19 | 27 | 23 | 31 | 18.651 | -19.14 | 0.936 | 0.983 | 8.519 | 0.933 | 1.004 | 0.952 |
| Ex7-16 | 19 | 53 | 23 | 5 | 18.650 | -21.06 | 1.183 | 1.282 | 2.997 | 1.090 | 0.934 | 0.922 |
| Ex7-17 | 19 | 57 | 19 | 5 | 17.223 | -21.29 | 1.209 | 1.312 | 2.232 | 1.109 | 0.928 | 0.922 |
| Ex7-18 | 19 | 35 | 15 | 31 | 15.797 | -18.10 | 0.965 | 1.003 | 8.976 | 0.953 | 0.991 | 0.962 |
| Ex7-19 | 19 | 70 | 5 | 6 | 11.959 | -20.12 | 1.240 | 1.325 | 1.903 | 1.146 | 0.930 | 0.936 |

[Table 725]

| | HFC-32 wt% | HFO-1123 wt% | propane wt% | HFO-1234ze(E) wt% | HOC MJ/kg | Td | Pc | Pe | TG | CAP | COP | Pc/Pe |
|---|---|---|---|---|---|---|---|---|---|---|---|---|
| Ex7-20 | 20 | 33 | 20 | 27 | 17.570 | -18.82 | 0.989 | 1.039 | 7.838 | 0.969 | 0.986 | 0.952 |
| Ex7-21 | 20 | 40 | 20 | 20 | 17.569 | -19.38 | 1.056 | 1.119 | 6.261 | 1.013 | 0.967 | 0.943 |
| Ex7-22 | 20 | 50 | 20 | 10 | 17.569 | -20.46 | 1.155 | 1.242 | 3.708 | 1.076 | 0.941 | 0.930 |
| Ex7-23 | 20 | 53 | 20 | 7 | 17.568 | -20.84 | 1.186 | 1.281 | 2.897 | 1.095 | 0.934 | 0.925 |
| Ex7-24 | 20 | 42 | 15 | 23 | 15.785 | -18.58 | 1.046 | 1.098 | 7.013 | 1.008 | 0.968 | 0.952 |
| Ex7-25 | 20 | 50 | 15 | 15 | 15.785 | -19.55 | 1.128 | 1.199 | 4.773 | 1.061 | 0.947 | 0.940 |
| Ex7-26 | 20 | 55 | 15 | 10 | 15.785 | -20.29 | 1.180 | 1.266 | 3.275 | 1.094 | 0.936 | 0.933 |
| Ex7-27 | 20 | 51 | 10 | 19 | 14.001 | -18.42 | 1.098 | 1.153 | 6.032 | 1.046 | 0.956 | 0.953 |
| Ex7-28 | 20 | 55 | 10 | 15 | 14.001 | -19.00 | 1.141 | 1.206 | 4.792 | 1.074 | 0.946 | 0.947 |
| Ex7-29 | 20 | 59 | 10 | 11 | 14.001 | -19.65 | 1.184 | 1.260 | 3.509 | 1.102 | 0.937 | 0.940 |
| Ex7-30 | 20 | 61 | 5 | 14 | 11.971 | -18.51 | 1.153 | 1.212 | 4.557 | 1.089 | 0.948 | 0.951 |
| Ex7-31 | 20 | 64 | 5 | 11 | 11.965 | -19.01 | 1.186 | 1.254 | 3.569 | 1.112 | 0.941 | 0.946 |
| Ex7-32 | 20 | 64 | 3 | 13 | 11.134 | -18.42 | 1.160 | 1.218 | 4.226 | 1.098 | 0.949 | 0.952 |
| Ex7-33 | 20 | 66 | 3 | 11 | 11.129 | -18.75 | 1.182 | 1.246 | 3.567 | 1.113 | 0.944 | 0.949 |
| Ex7-34 | 20 | 27 | 23 | 30 | 18.640 | -19.00 | 0.947 | 0.996 | 8.336 | 0.942 | 1.000 | 0.951 |
| Ex7-35 | 20 | 52 | 23 | 5 | 18.639 | -20.93 | 1.186 | 1.285 | 2.940 | 1.093 | 0.933 | 0.922 |
| Ex7-36 | 20 | 57 | 19 | 4 | 17.211 | -21.28 | 1.222 | 1.328 | 1.909 | 1.118 | 0.926 | 0.921 |
| Ex7-37 | 20 | 35 | 15 | 30 | 15.786 | -17.97 | 0.977 | 1.016 | 8.739 | 0.961 | 0.988 | 0.962 |
| Ex7-38 | 20 | 70 | 5 | 5 | 11.953 | -20.09 | 1.252 | 1.340 | 1.573 | 1.156 | 0.929 | 0.934 |

[Table 726]

| | HFC-32 wt% | HFO-1123 wt% | propane wt% | HFO-1234ze(E) wt% | HOC MJ/kg | Td | Pc | Pe | TG | CAP | COP | Pc/Pe |
|---|---|---|---|---|---|---|---|---|---|---|---|---|
| Ex7-39 | 21 | 33 | 20 | 26 | 17.558 | -18.71 | 1.000 | 1.052 | 7.603 | 0.978 | 0.983 | 0.950 |
| Ex7-40 | 21 | 40 | 20 | 19 | 17.558 | -19.30 | 1.068 | 1.133 | 5.990 | 1.022 | 0.964 | 0.942 |
| Ex7-41 | 21 | 50 | 20 | 9 | 17.557 | -20.43 | 1.167 | 1.258 | 3.397 | 1.085 | 0.939 | 0.928 |
| Ex7-42 | 21 | 53 | 20 | 6 | 17.557 | -20.83 | 1.198 | 1.297 | 2.579 | 1.104 | 0.932 | 0.924 |
| Ex7-43 | 21 | 42 | 15 | 22 | 15.774 | -18.49 | 1.058 | 1.112 | 6.732 | 1.016 | 0.965 | 0.951 |
| Ex7-44 | 21 | 50 | 15 | 14 | 15.774 | -19.51 | 1.140 | 1.214 | 4.461 | 1.070 | 0.945 | 0.939 |
| Ex7-45 | 21 | 55 | 15 | 9 | 15.773 | -20.27 | 1.192 | 1.280 | 2.949 | 1.104 | 0.934 | 0.931 |
| Ex7-46 | 21 | 51 | 10 | 18 | 13.990 | -18.36 | 1.110 | 1.167 | 5.722 | 1.055 | 0.954 | 0.952 |
| Ex7-47 | 21 | 55 | 10 | 14 | 13.990 | -18.95 | 1.153 | 1.220 | 4.470 | 1.083 | 0.944 | 0.945 |
| Ex7-48 | 21 | 59 | 10 | 10 | 13.989 | -19.62 | 1.197 | 1.275 | 3.180 | 1.112 | 0.935 | 0.938 |
| Ex7-49 | 21 | 61 | 5 | 13 | 11.966 | -18.46 | 1.165 | 1.226 | 4.231 | 1.099 | 0.946 | 0.950 |
| Ex7-50 | 21 | 64 | 5 | 10 | 11.959 | -18.97 | 1.198 | 1.269 | 3.240 | 1.121 | 0.939 | 0.944 |
| Ex7-51 | 21 | 64 | 3 | 12 | 11.128 | -18.36 | 1.172 | 1.232 | 3.900 | 1.108 | 0.947 | 0.951 |
| Ex7-52 | 21 | 66 | 3 | 10 | 11.123 | -18.70 | 1.194 | 1.260 | 3.239 | 1.123 | 0.943 | 0.947 |
| Ex7-53 | 21 | 27 | 23 | 29 | 18.629 | -18.86 | 0.958 | 1.008 | 8.141 | 0.950 | 0.997 | 0.951 |
| Ex7-54 | 21 | 52 | 23 | 4 | 18.628 | -20.90 | 1.198 | 1.300 | 2.633 | 1.102 | 0.931 | 0.922 |
| Ex7-55 | 21 | 57 | 19 | 3 | 17.200 | -21.28 | 1.235 | 1.343 | 1.582 | 1.127 | 0.924 | 0.919 |
| Ex7-56 | 21 | 35 | 15 | 29 | 15.775 | -17.85 | 0.988 | 1.028 | 8.493 | 0.970 | 0.985 | 0.961 |
| Ex7-57 | 21 | 70 | 5 | 4 | 11.947 | -20.07 | 1.264 | 1.355 | 1.244 | 1.166 | 0.927 | 0.933 |

EP 4 442 787 A1

[Table 727]

| | HFC-32 | HFO-1123 | propane | HFO-1234ze(E) | HOC | Td | Pc | Pe | TG | CAP | COP | Pc/Pe |
|---|---|---|---|---|---|---|---|---|---|---|---|---|
| | wt% | wt% | wt% | wt% | MJ/kg | | | | | | | |
| Ex7-58 | 22 | 31 | 20 | 27 | 17.547 | -18.46 | 0.992 | 1.042 | 7.789 | 0.973 | 0.985 | 0.952 |
| Ex7-59 | 22 | 40 | 20 | 18 | 17.547 | -19.23 | 1.079 | 1.147 | 5.710 | 1.031 | 0.961 | 0.941 |
| Ex7-60 | 22 | 50 | 20 | 8 | 17.546 | -20.41 | 1.180 | 1.273 | 3.081 | 1.094 | 0.937 | 0.927 |
| Ex7-61 | 22 | 49 | 24 | 5 | 18.973 | -20.58 | 1.184 | 1.282 | 3.043 | 1.094 | 0.935 | 0.923 |
| Ex7-62 | 22 | 40 | 15 | 23 | 15.763 | -18.20 | 1.049 | 1.100 | 6.981 | 1.012 | 0.968 | 0.953 |
| Ex7-63 | 22 | 45 | 15 | 18 | 15.763 | -18.78 | 1.100 | 1.162 | 5.607 | 1.046 | 0.955 | 0.946 |
| Ex7-64 | 22 | 53 | 15 | 10 | 15.762 | -19.93 | 1.184 | 1.269 | 3.234 | 1.100 | 0.936 | 0.933 |
| Ex7-65 | 22 | 50 | 10 | 18 | 13.979 | -18.15 | 1.111 | 1.167 | 5.715 | 1.057 | 0.954 | 0.952 |
| Ex7-66 | 22 | 53 | 10 | 15 | 13.979 | -18.60 | 1.143 | 1.207 | 4.783 | 1.078 | 0.947 | 0.947 |
| Ex7-67 | 22 | 56 | 10 | 12 | 13.978 | -19.08 | 1.176 | 1.248 | 3.824 | 1.100 | 0.940 | 0.942 |
| Ex7-68 | 22 | 59 | 5 | 14 | 11.964 | -18.08 | 1.154 | 1.212 | 4.559 | 1.094 | 0.949 | 0.952 |
| Ex7-69 | 22 | 62 | 5 | 11 | 11.958 | -18.58 | 1.187 | 1.254 | 3.575 | 1.116 | 0.942 | 0.947 |
| Ex7-70 | 22 | 62 | 3 | 13 | 11.126 | -17.97 | 1.161 | 1.218 | 4.229 | 1.103 | 0.950 | 0.953 |
| Ex7-71 | 22 | 64 | 3 | 11 | 11.122 | -18.31 | 1.183 | 1.246 | 3.573 | 1.118 | 0.945 | 0.950 |
| Ex7-72 | 22 | 26 | 24 | 28 | 18.975 | -18.83 | 0.965 | 1.017 | 7.928 | 0.956 | 0.996 | 0.949 |
| Ex7-73 | 22 | 40 | 24 | 14 | 18.974 | -19.72 | 1.096 | 1.174 | 5.135 | 1.041 | 0.958 | 0.934 |
| Ex7-74 | 22 | 52 | 19 | 7 | 17.189 | -20.55 | 1.196 | 1.292 | 2.672 | 1.105 | 0.933 | 0.926 |
| Ex7-75 | 22 | 38 | 15 | 25 | 15.763 | -18.00 | 1.029 | 1.076 | 7.499 | 0.999 | 0.974 | 0.956 |
| Ex7-76 | 22 | 65 | 5 | 8 | 11.951 | -19.11 | 1.220 | 1.297 | 2.578 | 1.139 | 0.936 | 0.941 |

In Ex7-1 to Ex7-76, since the working medium contains propane, HFO-1123, HFC-32, and HFO-1234ze(E) and the combustion heat amount is less than 19.000 MJ/kg, it was found that the working medium has excellent performance as a refrigerant.

In particular, in Ex7-1 to Ex7-16, Ex7-20 to Ex7-35, Ex7-39 to Ex7-54, and Ex7-58 to Ex7-73, in a case in which a content of HFC-32 with respect to a total content of propane, HFO-1123, HFO-1234ze(E), and HFC-32 is designated as E% by mass, a content of HFO-1234ze(E) with respect to the total content is designated as F% by mass, a content of propane with respect to the total content is designated as G% by mass, and a content of HFO-1123 with respect to the total content is designated as H% by mass, E, F, G, and H satisfy Formulas (4A) to (4D), so that a condensing pressure of less than 1.1993 could be realized, and a compression ratio of less than 0.9553 could be realized.

[Ex8-1 to Ex8-80]

In Ex8-1 to Ex8-80, a working medium in which propane, HFO-1123, HFC-32, and $CO_2$ were mixed in the compositions shown in Tables 728 and 731. The combustion heat amount (in the table, described as "HOC"), the discharge temperature (in the table, described as "Td"), the condensing pressure (in the table, described as "Pc"), the evaporating pressure (in the table, described as "Pe"), the temperature glide (in the table, described as "TG"), CAP, COP, and the pressure loss (in the table, described as "dP") of the working medium were measured. The measurement methods of the combustion heat amount, the discharge temperature, the condensing pressure, the evaporating pressure, the temperature glide, CAP, COP, and the pressure loss are as described above. In the table, the unit of the discharge temperature and the temperature glide is "°C". The measurement results are shown in Tables 728 to 731 together with the composition of the working medium.

[Table 728]

| | HFC-32 wt% | HFO-1123 wt% | propane wt% | CO$_2$ wt% | HOC MJ/kg | Td | Pc | Pe | TG | CAP | COP | dP |
|---|---|---|---|---|---|---|---|---|---|---|---|---|
| Ex8-1 | 19 | 34 | 29 | 18 | 18.873 | -13.86 | 1.473 | 1.631 | 7.570 | 1.361 | 0.927 | 0.687 |
| Ex8-2 | 19 | 41 | 25 | 15 | 17.765 | -15.75 | 1.463 | 1.623 | 5.434 | 1.342 | 0.922 | 0.741 |
| Ex8-3 | 19 | 45 | 25 | 11 | 18.191 | -17.20 | 1.395 | 1.542 | 4.646 | 1.281 | 0.925 | 0.791 |
| Ex8-4 | 19 | 50 | 25 | 6 | 18.724 | -19.06 | 1.312 | 1.442 | 3.606 | 1.202 | 0.926 | 0.865 |
| Ex8-5 | 19 | 52 | 25 | 4 | 18.937 | -19.81 | 1.279 | 1.402 | 3.181 | 1.171 | 0.926 | 0.899 |
| Ex8-6 | 19 | 48 | 20 | 13 | 16.194 | -17.22 | 1.474 | 1.638 | 3.514 | 1.342 | 0.917 | 0.790 |
| Ex8-7 | 19 | 50 | 20 | 11 | 16.407 | -17.92 | 1.439 | 1.596 | 3.153 | 1.311 | 0.918 | 0.816 |
| Ex8-8 | 19 | 56 | 20 | 5 | 17.046 | -20.09 | 1.336 | 1.470 | 2.009 | 1.215 | 0.919 | 0.910 |
| Ex8-9 | 19 | 55 | 15 | 11 | 14.623 | -18.15 | 1.475 | 1.635 | 2.215 | 1.337 | 0.914 | 0.836 |
| Ex8-10 | 19 | 60 | 15 | 6 | 15.156 | -19.92 | 1.386 | 1.528 | 1.341 | 1.256 | 0.916 | 0.914 |
| Ex8-11 | 19 | 61 | 10 | 10 | 12.946 | -18.19 | 1.481 | 1.634 | 1.679 | 1.344 | 0.913 | 0.862 |
| Ex8-12 | 19 | 64 | 10 | 7 | 13.265 | -19.25 | 1.426 | 1.568 | 1.183 | 1.294 | 0.914 | 0.910 |
| Ex8-13 | 19 | 67 | 5 | 9 | 11.052 | -17.86 | 1.471 | 1.612 | 1.519 | 1.345 | 0.917 | 0.881 |
| Ex8-14 | 19 | 69 | 5 | 7 | 11.251 | -18.58 | 1.434 | 1.568 | 1.190 | 1.311 | 0.918 | 0.914 |
| Ex8-15 | 19 | 69 | 3 | 9 | 10.217 | -17.52 | 1.470 | 1.607 | 1.556 | 1.351 | 0.921 | 0.880 |
| Ex8-16 | 19 | 71 | 3 | 7 | 10.415 | -18.26 | 1.433 | 1.562 | 1.224 | 1.317 | 0.922 | 0.914 |
| Ex8-17 | 19 | 58 | 19 | 4 | 16.796 | -20.54 | 1.326 | 1.459 | 1.600 | 1.204 | 0.919 | 0.932 |
| Ex8-18 | 19 | 45 | 20 | 16 | 15.875 | -16.18 | 1.527 | 1.701 | 4.029 | 1.388 | 0.914 | 0.753 |
| Ex8-19 | 19 | 70 | 6 | 5 | 11.867 | -19.47 | 1.397 | 1.525 | 0.977 | 1.274 | 0.918 | 0.949 |

[Table 729]

| | HFC-32 wt% | HFO-1123 wt% | propane wt% | CO$_2$ wt% | HOC MJ/kg | Td | Pc | Pe | TG | CAP | COP | dP |
|---|---|---|---|---|---|---|---|---|---|---|---|---|
| Ex8-20 | 20 | 35 | 28 | 17 | 18.612 | -14.36 | 1.469 | 1.626 | 6.839 | 1.355 | 0.925 | 0.700 |
| Ex8-21 | 20 | 41 | 25 | 14 | 17.861 | -16.03 | 1.448 | 1.604 | 5.133 | 1.329 | 0.923 | 0.749 |
| Ex8-22 | 20 | 45 | 25 | 10 | 18.287 | -17.47 | 1.381 | 1.524 | 4.343 | 1.267 | 0.925 | 0.801 |
| Ex8-23 | 20 | 50 | 25 | 5 | 18.819 | -19.33 | 1.298 | 1.424 | 3.308 | 1.189 | 0.925 | 0.877 |
| Ex8-24 | 20 | 51 | 25 | 4 | 18.926 | -19.70 | 1.282 | 1.405 | 3.099 | 1.173 | 0.925 | 0.893 |
| Ex8-25 | 20 | 48 | 20 | 12 | 16.29 | -17.46 | 1.458 | 1.618 | 3.258 | 1.329 | 0.917 | 0.798 |
| Ex8-26 | 20 | 50 | 20 | 10 | 16.503 | -18.16 | 1.423 | 1.576 | 2.894 | 1.297 | 0.919 | 0.825 |
| Ex8-27 | 20 | 55 | 20 | 5 | 17.035 | -19.96 | 1.338 | 1.473 | 1.945 | 1.217 | 0.920 | 0.903 |
| Ex8-28 | 20 | 55 | 15 | 10 | 14.719 | -18.36 | 1.458 | 1.614 | 2.002 | 1.324 | 0.914 | 0.844 |
| Ex8-29 | 20 | 59 | 15 | 6 | 15.145 | -19.77 | 1.387 | 1.528 | 1.301 | 1.258 | 0.916 | 0.907 |
| Ex8-30 | 20 | 61 | 10 | 9 | 13.041 | -18.37 | 1.462 | 1.612 | 1.498 | 1.329 | 0.914 | 0.870 |
| Ex8-31 | 20 | 63 | 10 | 7 | 13.254 | -19.08 | 1.427 | 1.568 | 1.165 | 1.296 | 0.915 | 0.902 |
| Ex8-32 | 20 | 66 | 5 | 9 | 11.049 | -17.66 | 1.471 | 1.611 | 1.514 | 1.348 | 0.918 | 0.873 |
| Ex8-33 | 20 | 67 | 5 | 8 | 11.148 | -18.02 | 1.453 | 1.589 | 1.351 | 1.331 | 0.919 | 0.889 |
| Ex8-34 | 20 | 68 | 5 | 7 | 11.247 | -18.39 | 1.434 | 1.567 | 1.185 | 1.314 | 0.919 | 0.906 |
| Ex8-35 | 20 | 68 | 4 | 8 | 10.73 | -17.86 | 1.452 | 1.587 | 1.371 | 1.334 | 0.920 | 0.889 |
| Ex8-36 | 20 | 68 | 3 | 9 | 10.213 | -17.32 | 1.470 | 1.606 | 1.554 | 1.353 | 0.921 | 0.873 |
| Ex8-37 | 20 | 70 | 3 | 7 | 10.411 | -18.06 | 1.433 | 1.561 | 1.221 | 1.319 | 0.922 | 0.905 |
| Ex8-38 | 20 | 58 | 19 | 3 | 16.892 | -20.77 | 1.312 | 1.441 | 1.352 | 1.190 | 0.918 | 0.943 |
| Ex8-39 | 20 | 45 | 20 | 15 | 15.97 | -16.42 | 1.510 | 1.681 | 3.779 | 1.375 | 0.915 | 0.760 |
| Ex8-40 | 20 | 70 | 6 | 4 | 11.963 | -19.65 | 1.379 | 1.503 | 0.651 | 1.259 | 0.918 | 0.959 |

[Table 730]

| | HFC-32 | HFO-1123 | propane | CO₂ | HOC | Td | Pc | Pe | TG | CAP | COP | dP |
|---|---|---|---|---|---|---|---|---|---|---|---|---|
| | wt% | wt% | wt% | wt% | MJ/kg | | | | | | | |
| Ex8-41 | 21 | 34 | 28 | 17 | 18.601 | -14.29 | 1.470 | 1.628 | 6.712 | 1.356 | 0.925 | 0.696 |
| Ex8-42 | 21 | 40 | 25 | 14 | 17.850 | -15.94 | 1.450 | 1.606 | 5.024 | 1.331 | 0.923 | 0.745 |
| Ex8-43 | 21 | 45 | 25 | 9 | 18.382 | -17.74 | 1.366 | 1.506 | 4.041 | 1.254 | 0.925 | 0.810 |
| Ex8-44 | 21 | 50 | 25 | 4 | 18.915 | -19.59 | 1.285 | 1.407 | 3.015 | 1.176 | 0.925 | 0.888 |
| Ex8-45 | 21 | 47 | 20 | 12 | 16.279 | -17.35 | 1.459 | 1.619 | 3.181 | 1.331 | 0.918 | 0.793 |
| Ex8-46 | 21 | 50 | 20 | 9 | 16.598 | -18.40 | 1.408 | 1.557 | 2.636 | 1.284 | 0.919 | 0.834 |
| Ex8-47 | 21 | 54 | 20 | 5 | 17.024 | -19.84 | 1.340 | 1.475 | 1.880 | 1.220 | 0.920 | 0.897 |
| Ex8-48 | 21 | 53 | 15 | 11 | 14.601 | -17.87 | 1.476 | 1.635 | 2.128 | 1.342 | 0.914 | 0.824 |
| Ex8-49 | 21 | 55 | 15 | 9 | 14.814 | -18.56 | 1.441 | 1.593 | 1.790 | 1.310 | 0.915 | 0.853 |
| Ex8-50 | 21 | 58 | 15 | 6 | 15.134 | -19.62 | 1.389 | 1.529 | 1.264 | 1.261 | 0.916 | 0.900 |
| Ex8-51 | 21 | 59 | 10 | 10 | 12.924 | -17.84 | 1.481 | 1.633 | 1.644 | 1.348 | 0.914 | 0.848 |
| Ex8-52 | 21 | 61 | 10 | 8 | 13.137 | -18.54 | 1.445 | 1.589 | 1.318 | 1.315 | 0.915 | 0.879 |
| Ex8-53 | 21 | 63 | 10 | 6 | 13.350 | -19.26 | 1.409 | 1.546 | 0.980 | 1.282 | 0.916 | 0.911 |
| Ex8-54 | 21 | 65 | 5 | 9 | 11.045 | -17.46 | 1.471 | 1.610 | 1.513 | 1.350 | 0.919 | 0.866 |
| Ex8-55 | 21 | 67 | 5 | 7 | 11.243 | -18.19 | 1.434 | 1.566 | 1.183 | 1.316 | 0.920 | 0.898 |
| Ex8-56 | 21 | 67 | 3 | 9 | 10.209 | -17.11 | 1.469 | 1.604 | 1.556 | 1.355 | 0.922 | 0.865 |
| Ex8-57 | 21 | 69 | 3 | 7 | 10.408 | -17.85 | 1.432 | 1.560 | 1.222 | 1.321 | 0.923 | 0.897 |
| Ex8-58 | 21 | 56 | 20 | 3 | 17.237 | -20.57 | 1.307 | 1.435 | 1.497 | 1.188 | 0.919 | 0.932 |
| Ex8-59 | 21 | 35 | 26 | 18 | 17.780 | -14.35 | 1.508 | 1.673 | 6.126 | 1.384 | 0.920 | 0.696 |
| Ex8-60 | 21 | 70 | 5 | 4 | 11.541 | -19.30 | 1.380 | 1.501 | 0.665 | 1.264 | 0.920 | 0.951 |

[Table 731]

| | HFC-32 | HFO-1123 | propane | CO₂ | HOC | Td | Pc | Pe | TG | CAP | COP | dP |
|---|---|---|---|---|---|---|---|---|---|---|---|---|
| | wt% | wt% | wt% | wt% | MJ/kg | | | | | | | |
| Ex8-61 | 22 | 33 | 28 | 17 | 18.589 | -14.22 | 1.471 | 1.629 | 6.584 | 1.358 | 0.925 | 0.693 |
| Ex8-62 | 22 | 38 | 25 | 15 | 17.732 | -15.51 | 1.468 | 1.627 | 5.103 | 1.348 | 0.922 | 0.729 |
| Ex8-63 | 22 | 45 | 25 | 8 | 18.478 | -18.02 | 1.351 | 1.487 | 3.742 | 1.241 | 0.925 | 0.820 |
| Ex8-64 | 22 | 49 | 25 | 4 | 18.904 | -19.49 | 1.287 | 1.410 | 2.929 | 1.179 | 0.925 | 0.882 |
| Ex8-65 | 22 | 46 | 20 | 12 | 16.268 | -17.24 | 1.460 | 1.620 | 3.107 | 1.333 | 0.918 | 0.788 |
| Ex8-66 | 22 | 50 | 20 | 8 | 16.694 | -18.64 | 1.392 | 1.538 | 2.381 | 1.270 | 0.920 | 0.843 |
| Ex8-67 | 22 | 53 | 20 | 5 | 17.013 | -19.72 | 1.342 | 1.477 | 1.816 | 1.223 | 0.920 | 0.891 |
| Ex8-68 | 22 | 53 | 15 | 10 | 14.697 | -18.06 | 1.459 | 1.614 | 1.921 | 1.328 | 0.915 | 0.832 |
| Ex8-69 | 22 | 55 | 15 | 8 | 14.910 | -18.76 | 1.424 | 1.572 | 1.579 | 1.296 | 0.916 | 0.861 |
| Ex8-70 | 22 | 57 | 15 | 6 | 15.123 | -19.47 | 1.389 | 1.530 | 1.228 | 1.263 | 0.917 | 0.893 |
| Ex8-71 | 22 | 59 | 10 | 9 | 13.019 | -18.01 | 1.463 | 1.610 | 1.471 | 1.334 | 0.915 | 0.856 |
| Ex8-72 | 22 | 61 | 10 | 7 | 13.232 | -18.72 | 1.427 | 1.567 | 1.138 | 1.301 | 0.916 | 0.887 |
| Ex8-73 | 22 | 62 | 10 | 6 | 13.339 | -19.08 | 1.410 | 1.546 | 0.968 | 1.284 | 0.916 | 0.904 |
| Ex8-74 | 22 | 64 | 5 | 9 | 11.041 | -17.26 | 1.470 | 1.609 | 1.517 | 1.352 | 0.919 | 0.858 |
| Ex8-75 | 22 | 66 | 5 | 7 | 11.240 | -17.98 | 1.434 | 1.565 | 1.186 | 1.318 | 0.920 | 0.890 |
| Ex8-76 | 22 | 66 | 3 | 9 | 10.205 | -16.90 | 1.469 | 1.603 | 1.562 | 1.357 | 0.923 | 0.857 |
| Ex8-77 | 22 | 68 | 3 | 7 | 10.404 | -17.64 | 1.432 | 1.559 | 1.227 | 1.323 | 0.924 | 0.890 |
| Ex8-78 | 22 | 55 | 20 | 3 | 17.226 | -20.44 | 1.309 | 1.437 | 1.437 | 1.191 | 0.919 | 0.925 |
| Ex8-79 | 22 | 35 | 26 | 17 | 17.876 | -14.62 | 1.492 | 1.654 | 5.825 | 1.371 | 0.921 | 0.703 |
| Ex8-80 | 22 | 70 | 4 | 4 | 11.119 | -18.94 | 1.379 | 1.497 | 0.685 | 1.269 | 0.923 | 0.942 |

In Ex8-1 to Ex8-80, since the working medium contains propane, HFO-1123, HFC-32, and CO₂ and the combustion heat amount is less than 19.000 MJ/kg, it was found that the working medium has excellent performance as a refrigerant.

In particular, in Ex8-1 to Ex8-16, Ex8-20 to Ex8-37, Ex8-41 to Ex8-57, and Ex8-61 to Ex8-77, in a case in which a content of HFC-32 with respect to a total content of propane, HFO-1123, $CO_2$, and HFC-32 is designated as J% by mass, a content of $CO_2$ with respect to the total content is designated as K% by mass, a content of propane with respect to the total content is designated as L% by mass, and a content of HFO-1123 with respect to the total content is designated as M% by mass, J, K, L, and M satisfy the following Formulas (5A) to (5D), so that a condensing pressure of less than 1.48789 could be realized, and a pressure loss of less than 0.92297 could be realized.

[Ex9-1 to Ex9-57]

In Ex9-1 to Ex9-57, a working medium in which propane, HFO-1123, HFC-32, and optionally $CF_3I$ were mixed in the compositions shown in Tables 732 and 733. The combustion heat amount (in the table, described as "HOC") of the working medium was measured. The measurement method of the combustion heat amount is as described above. The measurement results are shown in Tables 732 and 733 together with the composition of the working medium.

[Table 732]

|  | HFC-32 | HFO-1123 | propane | $CF_3I$ | HOC |
|---|---|---|---|---|---|
|  | wt% | wt% | wt% | wt% | MJ/kg |
| Ex9-1 | 25.0 | 70.0 | 5.0 | 0 | 11.923 |
| Ex9-2 | 23.75 | 66.5 | 4.75 | 5.0 | 11.371 |
| Ex9-3 | 22.0 | 61.6 | 4.4 | 12.0 | 10.597 |
| Ex9-4 | 21.5 | 60.2 | 4.3 | 14.0 | 10.377 |
| Ex9-5 | 20.0 | 56.0 | 4.0 | 20.0 | 9.714 |
| Ex9-6 | 25.0 | 65.0 | 10.0 | 0 | 13.945 |
| Ex9-7 | 23.75 | 61.75 | 9.5 | 5.0 | 13.314 |
| Ex9-8 | 22.0 | 57.2 | 8.8 | 12.0 | 12.431 |
| Ex9-9 | 21.5 | 55.9 | 8.6 | 14.0 | 12.174 |
| Ex9-10 | 20.0 | 52.0 | 8.0 | 20.0 | 11.385 |
| Ex9-11 | 25.0 | 60.0 | 15.0 | 0 | 15.729 |
| Ex9-12 | 23.8 | 57.0 | 14.3 | 5.0 | 15.009 |
| Ex9-13 | 22.0 | 52.8 | 13.2 | 12.0 | 14.001 |
| Ex9-14 | 21.5 | 51.6 | 12.9 | 14.0 | 13.713 |
| Ex9-15 | 20.0 | 48.0 | 12.0 | 20.0 | 12.849 |
| Ex9-16 | 25.0 | 55.0 | 20.0 | 0 | 17.513 |
| Ex9-17 | 23.8 | 52.3 | 19.0 | 5.0 | 16.704 |
| Ex9-18 | 22.0 | 48.4 | 17.6 | 12.0 | 15.571 |
| Ex9-19 | 21.5 | 47.3 | 17.2 | 14.0 | 15.247 |
| Ex9-20 | 20.0 | 44.0 | 16.0 | 20.0 | 14.276 |
| Ex9-21 | 25.0 | 50.0 | 25.0 | 0 | 19.297 |
| Ex9-22 | 23.8 | 47.5 | 23.8 | 5.0 | 18.399 |
| Ex9-23 | 22.0 | 44.0 | 22.0 | 12.0 | 17.141 |
| Ex9-24 | 21.5 | 43.0 | 21.5 | 14.0 | 16.782 |
| Ex9-25 | 20.0 | 40.0 | 20.0 | 20.0 | 15.704 |
| Ex9-26 | 27.0 | 70.0 | 3.0 | 0 | 11.080 |
| Ex9-27 | 25.7 | 66.5 | 2.9 | 5.0 | 10.569 |
| Ex9-28 | 22.0 | 57.1 | 2.4 | 18.5 | 9.192 |
| Ex9-29 | 20.0 | 51.8 | 2.2 | 26.0 | 8.427 |

[Table 733]

| | HFC-32 | HFO-1123 | propane | CF$_3$I | HOC |
|---|---|---|---|---|---|
| | wt% | wt% | wt% | wt% | MJ/kg |
| Ex9-30 | 27.0 | 65.0 | 8.0 | 0 | 13.169 |
| Ex9-31 | 25.7 | 61.8 | 7.6 | 5.0 | 12.555 |
| Ex9-32 | 22.0 | 53.0 | 6.5 | 18.5 | 10.895 |
| Ex9-33 | 20.0 | 48.1 | 5.9 | 26.0 | 9.973 |
| Ex9-34 | 27.0 | 60.0 | 13.0 | 0.0 | 14.993 |
| Ex9-35 | 25.7 | 57.0 | 12.4 | 5.0 | 14.310 |
| Ex9-36 | 22.0 | 48.9 | 10.6 | 18.5 | 12.465 |
| Ex9-37 | 20.0 | 44.4 | 9.6 | 26.0 | 11.441 |
| Ex9-38 | 27.0 | 55.0 | 18.0 | 0 | 16.777 |
| Ex9-39 | 25.7 | 52.3 | 17.1 | 5.0 | 16.005 |
| Ex9-40 | 22.0 | 44.8 | 14.7 | 18.5 | 13.919 |
| Ex9-41 | 20.0 | 40.7 | 13.3 | 26.0 | 12.761 |
| Ex9-42 | 27.0 | 50.0 | 23.0 | 0 | 18.561 |
| Ex9-43 | 25.7 | 47.5 | 21.9 | 5.0 | 17.700 |
| Ex9-44 | 22.0 | 40.8 | 18.7 | 18.5 | 15.373 |
| Ex9-45 | 20.0 | 37.0 | 17.0 | 26.0 | 14.081 |
| Ex9-46 | 31.0 | 65.0 | 4.0 | 0.0 | 11.482 |
| Ex9-47 | 29.5 | 61.8 | 3.8 | 5.0 | 10.952 |
| Ex9-48 | 22.0 | 46.2 | 2.8 | 29 | 8.407 |
| Ex9-49 | 31.0 | 60.0 | 9.0 | 0 | 13.521 |
| Ex9-50 | 29.5 | 57.0 | 8.6 | 5.0 | 12.912 |
| Ex9-51 | 22.0 | 42.6 | 6.4 | 29.0 | 9.890 |
| Ex9-52 | 31.0 | 55.0 | 14.0 | 0 | 15.306 |
| Ex9-53 | 29.5 | 52.3 | 13.3 | 5.0 | 14.607 |
| Ex9-54 | 22.0 | 39.1 | 9.9 | 29.0 | 11.253 |
| Ex9-55 | 31.0 | 50.0 | 19.0 | 0 | 17.090 |
| Ex9-56 | 29.5 | 47.5 | 18.1 | 5.0 | 16.302 |
| Ex9-57 | 22.0 | 35.5 | 13.5 | 29.0 | 12.520 |

In Ex9-1 to Ex9-57, since the working medium contains propane, HFO-1123, HFC-32, and optionally CF$_3$I and the combustion heat amount is less than 19.000 MJ/kg, it was found that the working medium has excellent performance as a refrigerant.

In particular, it was found that the combustion heat amount decreases in the case of containing four components of propane, HFO-1123, HFC-32, and CF$_3$I, as compared with the case of containing three components of propane, HFO-1123, and HFC-32.

[Ex10-1 toEx10-15]

In Ex10-1 to Ex10-15, a working medium in which propane, HFO-1123, and HFO-1234yf were mixed in the composition shown in Table 734. The combustion heat amount (in the table, described as "HOC"), the discharge temperature (in the table, described as "Td"), the condensing pressure (in the table, described as "Pc"), CAP, and the temperature glide (in the table, described as "TG") of the working medium were measured. In the table, the unit of the discharge temperature and the temperature glide is "°C". The measurement methods of the combustion heat amount, the discharge temperature, the condensing pressure, CAP, and the temperature glide are as described above. The measurement results are shown in Table 734 together with the composition of the working medium.

[Table 734]

| | HFO-1123 | R1234yf | propane | HOC | Td | Pc | CAP | TG |
|---|---|---|---|---|---|---|---|---|
| | wt% | wt% | wt% | MJ/kg | | | | |
| Ex10-1 | 73.0 | 25.0 | 2.0 | 10.965 | -23.70 | 0.983 | 0.942 | 5.128 |
| Ex10-2 | 66.0 | 25.0 | 9.0 | 13.891 | -24.15 | 0.981 | 0.935 | 5.148 |
| Ex10-3 | 62.0 | 35.0 | 3.0 | 11.463 | -24.06 | 0.896 | 0.881 | 6.364 |
| Ex10-4 | 56.0 | 35.0 | 9.0 | 13.971 | -24.44 | 0.894 | 0.875 | 6.302 |
| Ex10-5 | 52.0 | 45.0 | 3.0 | 11.544 | -24.74 | 0.813 | 0.818 | 7.049 |
| Ex10-6 | 46.0 | 45.0 | 9.0 | 14.051 | -25.10 | 0.812 | 0.814 | 6.907 |
| Ex10-7 | 42.0 | 55.0 | 3.0 | 11.624 | -25.76 | 0.735 | 0.755 | 7.186 |
| Ex10-8 | 36.0 | 55.0 | 9.0 | 14.132 | -26.13 | 0.734 | 0.752 | 6.933 |
| Ex10-9 | 32.0 | 65.0 | 3.0 | 11.704 | -27.14 | 0.660 | 0.690 | 6.731 |
| Ex10-10 | 26.0 | 65.0 | 9.0 | 14.212 | -27.54 | 0.659 | 0.686 | 6.338 |
| Ex10-11 | 28.0 | 70.0 | 2.0 | 11.327 | -27.96 | 0.622 | 0.655 | 6.246 |
| Ex10-12 | 21.0 | 70.0 | 9.0 | 14.252 | -28.40 | 0.623 | 0.651 | 5.795 |
| Ex10-13 | 15.0 | 70.0 | 15.0 | 16.425 | -29.18 | 0.609 | 0.633 | 4.678 |
| Ex10-14 | 15.0 | 75.0 | 10.0 | 14.670 | -29.51 | 0.585 | 0.613 | 4.909 |
| Ex10-15 | 78.0 | 20.0 | 2.0 | 10.925 | -23.68 | 1.029 | 0.974 | 4.340 |

In Ex10-1 to Ex10-15, since the working medium contains propane, HFO-1123, and HFO-1234yf and the combustion heat amount is less than 19.000 MJ/kg, it was found that the working medium has excellent performance as a refrigerant.

In particular, in Ex10-1 to Ex10-12, the content of HFO-1234yf is from 25.0% by mass to 70.0% by mass with respect to a total content of propane, HFO-1123, and HFO-1234yf, the content of propane is 9.0% by mass or less with respect to the total content, and the total content is 78.5% by mass or more with respect to the total amount of the working medium, so that the combustion heat amount was lower, and a condensing pressure of 1.0 or less and CAP of 0.65 or more could be achieved.

The entire contents of the disclosures by Japanese Patent Application No. 2021-197399 filed on December 3, 2021, Japanese Patent Application No. 2022-067936 filed on April 15, 2022, and Japanese Patent Application No. 2022-162767 filed on October 7, 2022 are incorporated herein by reference. All the literature, patent application, and technical standards cited herein are also herein incorporated to the same extent as provided for specifically and severally with respect to an individual literature, patent application, and technical standard to the effect that the same should be so incorporated by reference.

**Claims**

1. A working medium comprising:

   propane;
   at least one of 1,1,2-trifluoroethylene or (E)-1,2-difluoroethylene; and
   at least one third component selected from the group consisting of 2,3,3,3-tetrafluoro-1-propene, (E)-1,3,3,3-tetrafluoropropene, difluoromethane, $CO_2$, $CF_3I$, (Z)-1-chloro-2,3,3,3-tetrafluoropropene, (E)-1-chloro-2,3,3,3-tetrafluoropropene, (E)-1-chloro-3,3,3-trifluoropropene, (E)-1,1,1,4,4,4-hexafluoro-2-butene, (Z)-1,2,3,3,3-pentafluoropropene, and (E)-1,2,3,3,3-pentafluoropropene,
   wherein a combustion heat amount is less than 19.000 MJ/kg.

2. The working medium according to claim 1, wherein:

   the working medium comprises the propane, the 1,1,2-trifluoroethylene, and the 2,3,3,3-tetrafluoro-1-propene,
   a mass ratio of a content of the propane and a content of the 1,1,2-trifluoroethylene is from 5:95 to 29:71,
   a content of the 2,3,3,3-tetrafluoro-1-propene is from 10.5% by mass to 25.0% by mass with respect to a total content of the propane, the 1,1,2-trifluoroethylene, and the 2,3,3,3-tetrafluoro-1-propene, and
   the total content of the propane, the 1,1,2-trifluoroethylene, and the 2,3,3,3-tetrafluoro-1-propene is 80% by mass or more with respect to a total amount of the working medium.

3. The working medium according to claim 1, wherein:

the working medium comprises the propane, the 1,1,2-trifluoroethylene, and the difluoromethane,
a mass ratio of a content of the propane and a content of the 1,1,2-trifluoroethylene is from 18:82 to 22:78, and
a content of the difluoromethane is from 5.5% by mass to 19.5% by mass with respect to a total content of the propane, the 1,1,2-trifluoroethylene, and the difluoromethane.

4. The working medium according to claim 1, wherein:

the working medium comprises the propane, the 1,1,2-trifluoroethylene, and the difluoromethane,
a mass ratio of a content of the propane and a content of the 1,1,2-trifluoroethylene is from 5:95 to 23:77, and
a content of the difluoromethane is from 20.1% by mass to 21.9% by mass with respect to a total content of the propane, the 1,1,2-trifluoroethylene, and the difluoromethane.

5. The working medium according to claim 1, wherein:

the working medium comprises the propane, the 1,1,2-trifluoroethylene, and the difluoromethane,
a mass ratio of a content of the propane and a content of the 1,1,2-trifluoroethylene is from 18.9:81.1 to 23:77, and
a content of the difluoromethane is from 12.5% by mass to 21.5% by mass with respect to a total content of the propane, the 1,1,2-trifluoroethylene, and the difluoromethane.

6. The working medium according to claim 1, wherein:

the working medium comprises the propane, the 1,1,2-trifluoroethylene, and the (E)-1,3,3,3 -tetrafluoropropene,
a content of the propane is 25.0% by mass or less with respect to a total content of the propane and the 1,1,2-trifluoroethylene,
a content of the (E)-1,3,3,3-tetrafluoropropene is from 11.0% by mass to 25.0% by mass with respect to a total content of the propane, the 1,1,2-trifluoroethylene, and the (E)-1,3,3,3-tetrafluoropropene, and
the total content is 78.5% by mass or more with respect to a total amount of the working medium.

7. The working medium according to claim 1, wherein:

the working medium comprises the propane, the 1,1,2-trifluoroethylene, and the (E)-1,3,3,3 -tetrafluoropropene,
a content of the propane is 10.0% by mass or less with respect to a total content of the propane and the 1,1,2-trifluoroethylene, and
a content of the (E)-1,3,3,3-tetrafluoropropene is 15.0% by mass or less with respect to a total content of the propane, the 1,1,2-trifluoroethylene, and the (E)-1,3,3,3-tetrafluoropropene.

8. The working medium according to claim 1, wherein:

the working medium comprises the propane, the 1,1,2-trifluoroethylene, and the (E)-1,3,3,3 -tetrafluoropropene,
a content of the propane is 20.0% by mass or less with respect to a total content of the propane and the 1,1,2-trifluoroethylene, and
a content of the (E)-1,3,3,3-tetrafluoropropene is 9.0% by mass or less with respect to a total content of the propane, the 1,1,2-trifluoroethylene, and the (E)-1,3,3,3-tetrafluoropropene.

9. The working medium according to claim 1, wherein:

the working medium comprises the propane, the 1,1,2-trifluoroethylene, and the $CO_2$,
in a case in which a content of the 1,1,2-trifluoroethylene with respect to a total content of the propane, the 1,1,2-trifluoroethylene, and the $CO_2$ is designated as $X_i$% by mass, and a content of the $CO_2$ with respect to the total content is designated as $Y_1$% by mass, the $X_1$ and the $Y_1$ satisfy the following Formula (1), and
the total content is 78.5% by mass or more with respect to a total amount of the working medium:

$$\text{Formula (1): } -0.00115X_1{}^3 + 0.13537X_1{}^2 - 6.20662X_1 + 151.14664 \leq Y_1 \leq 59.$$

**10.** The working medium according to claim 9, wherein the content of the $CO_2$ is 20.0% by mass or less with respect to the total content.

**11.** The working medium according to claim 1, wherein:

the working medium comprises the propane, the 1,1,2-trifluoroethylene, and the $CF_3I$,
in a case in which a content of the propane with respect to a total content of the propane, the 1,1,2-trifluoroethylene, and the $CF_3I$ is designated as $X_2$% by mass, and a content of the $CF_3I$ with respect to the total content is designated as $Y_2$% by mass, the $X_2$ and the $Y_2$ satisfy the following Formula (2A), and
the total content is 78.5% by mass or more with respect to a total amount of the working medium:

$$\text{Formula (2A): } Y_2 \leq -1.125X_2 + 39.$$

**12.** The working medium according to claim 11, wherein the $X_2$ and the $Y_2$ further satisfy the following Formula (2B):

$$\text{Formula (2B): } Y_2 \leq 0.05994X_2^2 + 0.23676X_2 + 11.85165.$$

**13.** The working medium according to claim 1, wherein:

the working medium comprises the propane, the (E)-1,2-difluoroethylene, and the third component, and
the combustion heat amount is less than 15.250 MJ/kg.

**14.** The working medium according to claim 1, wherein:

the working medium comprises the propane, the (E)-1,2-difluoroethylene, and the third component, and
a content of the propane is 10.0% by mass or less with respect to a total content of the propane and the (E)-1,2-difluoroethylene.

**15.** The working medium according to claim 1, wherein:

the working medium comprises the propane, the 1,1,2-trifluoroethylene, the 2,3,3,3-tetrafluoro-1-propene, and the difluoromethane, and
in a case in which a content of the difluoromethane with respect to a total content of the propane, the 1,1,2-trifluoroethylene, the 2,3,3,3-tetrafluoro-1-propene, and the difluoromethane is designated as A% by mass, a content of the 2,3,3,3-tetrafluoro-1-propene with respect to the total content is designated as B% by mass, a content of the propane with respect to the total content is designated as C% by mass, and a content of the 1,1,2-trifluoroethylene with respect to the total content is designated as D% by mass, the A, the B, the C, and the D satisfy the following Formulas (3A) to (3D):

$$\text{Formula (3A): } 19 \leq A \leq 22,$$

$$\text{Formula (3B): } 0.1562A^2 - 5.88147A + 56.79 \leq B \leq -0.1444A^2 + 4.9917A - 0.9609,$$

$$\text{Formula (3C): } 3 \leq C \leq -0.0168B + 0.032A + 23.365,$$

and

$(0.0006A^2 + 0.0103A - 2.6844)C + (0.1143A^2 - 5.4982A + 133.96) \leq D \leq (0.00025A + 0.0213)C^2 + (-0.0003A^2 - 0.0055A - 1.1287)C + (-1.0639A + 92.613).$

**16.** The working medium according to claim 1, wherein:

the working medium comprises the propane, the 1,1,2-trifluoroethylene, the (E)-1,3,3,3-tetrafluoropropene, and the difluoromethane, and

in a case in which a content of the difluoromethane with respect to a total content of the propane, the 1,1,2-trifluoroethylene, the (E)-1,3,3,3-tetrafluoropropene, and the difluoromethane is designated as E% by mass, a content of the (E)-1,3,3,3-tetrafluoropropene with respect to the total content is designated as F% by mass, a content of the propane with respect to the total content is designated as G% by mass, and a content of the 1,1,2-trifluoroethylene with respect to the total content is designated as H% by mass, the E, the F, the G, and the H satisfy the following Formulas (4A) to (4D):

$$\text{Formula (4A): } 19 \leq E \leq 22,$$

$$\text{Formula (4B): } -0.0577E^2 + 2.595E - 25.794 \leq F \leq -0.453E + 43.836,$$

$$\text{Formula (4C): } 2 \leq G \leq 0.030E + 23.40,$$

and

$$(0.0053E^2 + 0.1950E - 0.0880)E + (-0.0044E^2 - 0.6605E + 83.7959) \leq H \leq 0.0255G^2 + (-0.0042E^2 + 0.1577E - 2.8414)G + (-1.059E + 91.6916).$$

**17.** The working medium according to claim 1, wherein:

the working medium comprises the propane, the 1,1,2-trifluoroethylene, the $CO_2$, and the difluoromethane, and in a case in which a content of the difluoromethane with respect to a total content of the propane, the 1,1,2-trifluoroethylene, the $CO_2$, and the difluoromethane is designated as J% by mass, a content of the $CO_2$ with respect to the total content is designated as K% by mass, a content of the propane with respect to the total content is designated as L% by mass, and a content of the 1,1,2-trifluoroethylene with respect to the total content is designated as M% by mass, the J, the K, the L, and the M satisfy the following Formulas (5A) to (5D):

$$\text{Formula (5A): } 19 \leq J \leq 22,$$

$$\text{Formula (5B): } 0.074J^2 - 3.2047J - 37.862 \leq K \leq 0.055J^2 - 2.2893J + 42.055,$$

$$\text{Formula (5C): } 1 \leq L \leq 0.2985K + 23.9,$$

and

$$(-0.00015J^2 + 0.0055J - 0.0637)L^2 + (0.0031J^2 - 0.1025J - 0.0673)L + (-0.0017J^2 - 1.0368J + 91.439) \leq M \leq (-0.000054J^2 + 0.00165J - 0.00500)L^2 + (0.0029J^2 - 0.1040J - 0.1186)L + (-0.1221J^2 + 4.1517J + 39.5).$$

**18.** The working medium according to claim 1, wherein the working medium comprises the propane, the 1,1,2-trifluoroethylene, the $CF_3I$, and the difluoromethane.

**19.** The working medium according to claim 1, wherein:

the working medium comprises the propane, the 1,1,2-trifluoroethylene, and the 2,3,3,3-tetrafluoro-1-propene, a content of the 2,3,3,3-tetrafluoro-1-propene is from 25.0% by mass to 70.0% by mass with respect to a total content of the propane, the 1,1,2-trifluoroethylene, and the 2,3,3,3-tetrafluoro-1-propene,

a content of the propane is 9.0% by mass or less with respect to the total content, and
the total content is 78.5% by mass or more with respect to a total amount of the working medium.

## FIG.1

# FIG.2

# FIG.3

# FIG.4

# FIG.5

FIG.6

# FIG.7

# FIG.8

# FIG.9

# FIG.10

# FIG.11

# FIG.12

# FIG.13

FIG.14

## INTERNATIONAL SEARCH REPORT

| International application No. |
| --- |
| **PCT/JP2022/043431** |

**A. CLASSIFICATION OF SUBJECT MATTER**

*C09K 5/04*(2006.01)i
FI: C09K5/04 B; C09K5/04 A; C09K5/04 C; C09K5/04 E; C09K5/04 F

According to International Patent Classification (IPC) or to both national classification and IPC

**B. FIELDS SEARCHED**

Minimum documentation searched (classification system followed by classification symbols)

C09K5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2016/194847 A1 (ASAHI GLASS CO., LTD.) 08 December 2016 (2016-12-08) paragraphs [0161]-[0163], tables 7-9 | 1-3, 5-8 |
| A | | 4, 9-19 |
| X | WO 2018/047816 A1 (ASAHI GLASS CO., LTD.) 15 March 2018 (2018-03-15) paragraphs [0179]-[0180], tables 4-5 | 1, 7, 15-17 |
| A | | 2-6, 8-14, 18-19 |
| X | WO 2020/071380 A1 (AGC INC.) 09 April 2020 (2020-04-09) paragraph [0165], table 18 | 1, 11-12 |
| A | | 2-10, 13-19 |
| A | WO 2012/157765 A1 (ASAHI GLASS CO., LTD.) 22 November 2012 (2012-11-22) paragraph [0093], table 8 | 1-19 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **28 December 2022** | **17 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/043431**

| Patent document cited in search report | | | Publication date (day/month/year) | Patent family member(s) | | | Publication date (day/month/year) |
|---|---|---|---|---|---|---|---|
| WO | 2016/194847 | A1 | 08 December 2016 | US tables 7-9 | 2018/0079941 | A1 | |
| | | | | EP | 3305869 | A1 | |
| | | | | CN | 107614652 | A | |
| WO | 2018/047816 | A1 | 15 March 2018 | US tables 4-5 | 2019/0257553 | A1 | |
| | | | | EP | 3511392 | A1 | |
| | | | | CN | 109689831 | A | |
| WO | 2020/071380 | A1 | 09 April 2020 | US table 18 | 2021/0222040 | A1 | |
| | | | | EP | 3862408 | A1 | |
| | | | | CN | 112805352 | A | |
| WO | 2012/157765 | A1 | 22 November 2012 | US table 8 | 2014/0077123 | A1 | |
| | | | | EP | 2711407 | A1 | |
| | | | | CN | 103547652 | A | |
| | | | | RU | 2013156342 | A | |
| | | | | BR | 112013029408 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012157764 A
- JP 2021167428 A
- US 4249412 A
- JP H10502737 A
- JP 2007511645 A
- JP 2008500437 A
- JP 2008531836 A
- JP 2021197399 A
- JP 2022067936 A
- JP 2022162767 A

**Non-patent literature cited in the description**

- *Designation and Safety Classification of Refrigerants,* 2016, vol. 34
- **S. BENSON.** Thermo chemical kinetics. Wiley Interscience, 1976
- *J. Phys. Chem. A,* 2018, vol. 122, 4593-4600
- *Greenhouse Gas Reporting Program: Addition of Global Warming Potentials,* 2014